Europäisches Patentamt

European Patent Office

Office européen des brevets

(11) Publication number : **0 533 348 A2**

# (12) EUROPEAN PATENT APPLICATION

(21) Application number : 92307399.3

(51) Int. Cl.⁵ : **G06F 15/72**

(22) Date of filing : 12.08.92

(30) Priority : 26.08.91 IL 99302

(43) Date of publication of application :
24.03.93 Bulletin 93/12

(84) Designated Contracting States :
AT BE CH DE DK ES FR GB GR IE IT LI LU MC
NL PT SE

(71) Applicant : SCITEX CORPORATION LTD.
7 Hamada Street
Herzliya 46103 (IL)

(72) Inventor : Armoni, Shimon R.
5 Hashiva Street
Netanya (IL)

(74) Representative : Hillier, Peter
Reginald W. Barker & Co., 13, Charterhouse
Square
London, EC1M 6BA (GB)

(54) **Apparatus and method for providing and displaying a partially transparent image.**

(57) A system for providing a digital representation of a combined image whose appearance resembles that of a partially transparent top image superimposed on a base image, the system including depth reducing apparatus for receiving relatively high depth transparency information defining the transparency of the top image to the base image and for computing relatively low depth transparency information, and combined image providing apparatus for receiving a digital representation of the top image, a digital representation of the base image and the low depth transparency information and for computing a digital representation of the combined image.

## FIELD OF THE INVENTION

The present invention relates to apparatus and methods for providing an image including a first top image which is partially transparent to a second base image.

## BACKGROUND OF THE INVENTION

In CAD systems having a high-resolution color display, it is often desired to provide a combined image whose appearance is that of a first top image which is partially transparent to a second base image. The transparency of the top image or of a plurality of locations therewithin is normally determined by a user. The more transparent the top image is, the more of the base image is seen. Conversely, the more opaque the top image is, the of less of the base image is seen.

Digital precursors of the combined image typically include top color data representing the color of the top image at each location therewithin, base color data representing the color of the base image at each location therewithin, and transparency data representing the transparency of the top image to the base image at each location within the top image. The transparency level is normally represented in high depth, such as 8 bits per pixel. The level of transparency may or may not be equal in all locations or pixels of the top image. If the transparency level differs over pixels of the top image, a relatively large storage area is normally required to accomodate the transparency level information.

Error diffusion is one of many known techniques employed, inter alia, for providing low depth digital color information in order to create an illusion of a high depth color image. For example, a color image may be represented in 3 8-bit color components, or a total of 24 bits per pixel. Error diffusion may be employed to reduce the depth of the 3 color components to 2, 3 and 3 bits, respectively, thereby to provide an 8 bit per pixel representation of the color image which, when displayed, is of comparable quality to a display of the 24 bit/pixel representation.

## SUMMARY OF THE INVENTION

The present invention seeks to provide an apparatus and method for storing and displaying a representation of transparency information for constructing a combined image characterized in that the stored representation is relatively compact and is capable of providing a high quality display of the combined image.

There is thus provided in accordance with a preferred embodiment of the present invention a system for providing a digital representation of a combined image whose appearance resembles that of a partially transparent top image superimposed on a base image, the system including depth reducing apparatus for receiving relatively high depth transparency information defining the transparency of the top image to the base image and for computing relatively low depth transparency information, and combined image providing apparatus for receiving a digital representation of the top image, a digital representation of the base image and the low depth transparency information and for computing a digital representation of the combined image.

Further in accordance with a preferred embodiment of the present invention, the system includes display apparatus for displaying the combined image in accordance with the output of the combined image providing apparatus.

There is also provided, in accordance with a preferred embodiment of the present invention, a system for displaying a combined image which resembles a partially transparent top image superimposed on a base image, the system including apparatus for receiving a digital representation of a top image, a digital representation of a base image and a relatively low depth digital representation of the transparency of the top image to the base image, and apparatus for employing the digital representations of the top and base images and the relatively low depth digital representation of the transparency in order to provide a display of the combined image, the display being characterized in that its quality is comparable to the quality of a display of the combined image provided by employing the digital representations of the top and base images and a relatively high depth digital representation of the transparency.

Further in accordance with a preferred embodiment of the present invention, the relatively low depth digital representation includes a digital representation of a plurality of pixels including less than 8 bits of information per pixel, such as 2 bits of information per pixel.

Still further in accordance with a preferred embodiment of the present invention, the relatively low depth digital representation includes a digital representation of a plurality of pixels including n bits of information per pixel and the digital representation of the top and base images each include a digital representation of a plurality of pixels including m bits of information per pixel, and n is less than m.

Additionally in accordance with a preferred embodiment of the present invention, the display of the com-

EP 0 533 348 A2

bined image is characterized in that transitions between transparency levels appear smooth at normal viewing distance.

Still further in accordance with a preferred embodiment of the present invention, the depth reducing apparatus includes spatial dithering apparatus.

Additionally in accordance with a preferred embodiment of the present invention, the spatial dithering apparatus includes error diffusing apparatus.

There is also provided, in accordance with a preferred embodiment of the present invention, a system for storing information representing transparencies of a plurality of locations of a combined image whose appearance resembles that of a partially transparent top image superimposed on a base image, the system including a relatively low depth digital representation of the transparencies of the plurality of locations of the combined image, characterized in that, when the relatively low depth digital representation is employed together with digital representations of top and base images in order to provide a display of a combined image, the quality of display of the combined image is comparable to the quality of display of a combined image provided by employing the digital representations of the top and base images together with a relatively high depth digital representation of the transparencies of the plurality of locations of the combined image.

There is also provided in accordance with a preferred embodiment of the present invention a method for providing a digital representation of a combined image whose appearance resembles that of a partially transparent top image superimposed on a base image, the method including the steps of receiving relatively high depth transparency information defining the transparency of the top image to the base image and computing relatively low depth transparency information, and receiving a digital representation of the top image, a digital representation of the base image and the low depth transparency information and computing a digital representation of the combined image.

Further in accordance with a preferred embodiment of the present invention, the method includes the step of displaying the combined image in accordance with the output of the second receiving step.

There is also provided, in accordance with a preferred embodiment of the present invention, a method for displaying a combined image which resembles a partially transparent top image superimposed on a base image, the method including the steps of receiving a digital representation of a top image, a digital representation of a base image and a relatively low depth digital representation of the transparency of the top image to the base image, and employing the digital representations of the top and base images and the relatively low depth digital representation of the transparency in order to provide a display of the combined image, the display being characterized in that its quality is comparable to the quality of a display of the combined image provided by employing the digital representations of the top and base images and a relatively high depth digital representation of the transparency.

Further in accordance with a preferred embodiment of the present invention, the relatively low depth digital representation includes a digital representation of a plurality of pixels including less than 8 bits of information per pixel.

Still further in accordance with a preferred embodiment of the present invention, the relatively low depth digital representation includes a digital representation of a plurality of pixels including 2 bits of information per pixel.

Additionally in accordance with a preferred embodiment of the present invention, the relatively low depth digital representation includes a digital representation of a plurality of pixels including n bits of information per pixel and the digital representation of the top and base images each include a digital representation of a plurality of pixels including m bits of information per pixel, and n is less than m.

Still further in accordance with a preferred embodiment of the present invention, °the display of the combined image is characterized in that transitions between transparency levels appear smooth at normal viewing distance.

Further in accordance with a preferred embodiment of the present invention, the second step of receiving includes the step of performing a spatial dithering algorithm on the high depth transparency information.

Still further in accordance with a preferred embodiment of the present invention, the step of performing a spatial dithering algorithm includes the step of performing an error diffusion algorithm on the high depth transparency information.

There is also provided in accordance with a preferred embodiment of the present invention a method for storing information representing transparencies of a plurality of locations of a combined image whose appearance resembles that of a partially transparent top image superimposed on a base image, the method including the step of storing a relatively low depth digital representation of the transparencies of the plurality of locations of the combined image, characterized in that, when the relatively low depth digital representation is employed together with digital representations of top and base images in order to provide a display of a combined image, the quality of display of the combined image is comparable to the quality of display of a combined image pro-

3

vided by employing the digital representations of the top and base images together with a relatively high depth digital representation of the transparencies of the plurality of locations of the combined image.

BRIEF DESCRIPTION OF THE DRAWINGS

The present invention will be understood and appreciated from the following detailed description, taken in conjunction with the drawings in which:

Fig. 1 is a schematic block diagram of apparatus for providing a compact representation of transparency information for constructing a high-quality combined image on a display;

Fig. 2 is a pictorial representation of an example of digital transparency information which it is desired to represent compactly and display on a CRT screen;

Figs. 3A and 3B are colored illustrations of sample base images;

Figs. 4A and 4B are colored illustrations of sample top images;

Fig. 5A is a colored illustration of the top image of Fig. 4A, superimposed on the base image of Fig. 3A, in accordance with the transparency information of Fig. 2;

Fig. 5B is a colored illustration of the top image of Fig. 4B, superimposed on the base image of Fig. 3B, in accordance with the transparency information of Fig. 2;

Fig. 6A is an enlarged colored illustration of a peripheral portion of the top image component of Fig. 5A;

Fig. 6B is an enlarged colored illustration of a peripheral portion of the top image component of Fig. 5B;

Fig. 7A is an enlarged colored illustration of a central portion of the top image component of Fig. 5A; and

Fig. 7B is an enlarged colored illustration of a central portion of the top image component of Fig. 5B.

DETAILED DESCRIPTION OF PREFERRED EMBODIMENTS

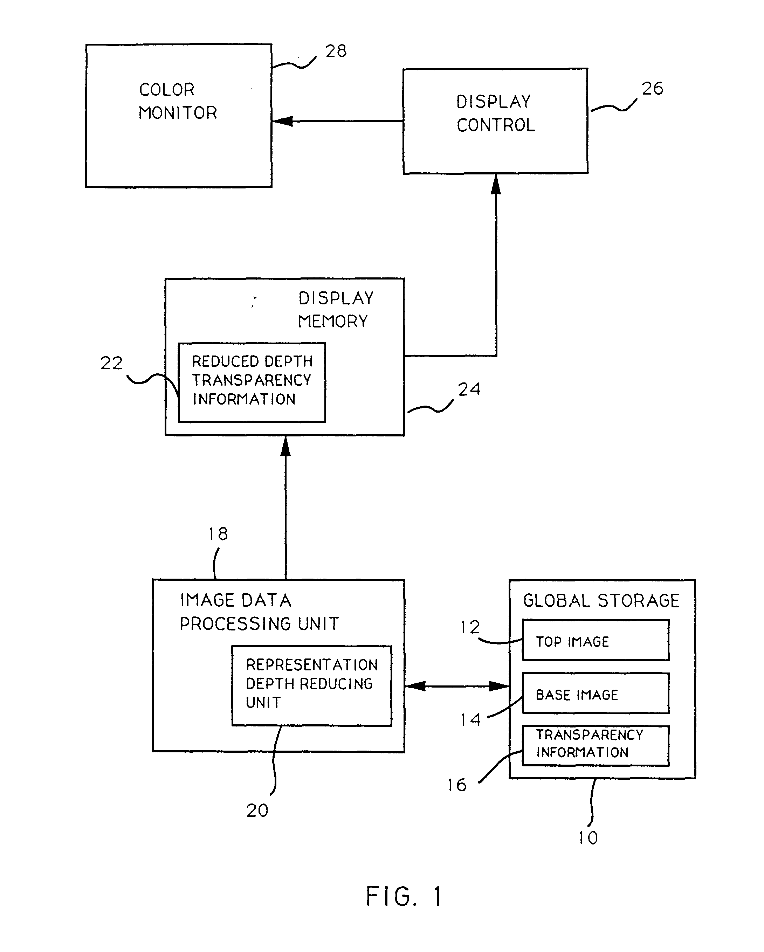

Reference is made to Fig. 1 which is a schematic block diagram of apparatus for providing a compact representation of transparency information for constructing a combined image which is nonetheless capable of providing a high quality display of the combined image.

The apparatus of Fig. 1 comprises a global storage device 10 such as a disk which stores a digital representation 12 of color information pertaining to a top image and a digital representation 14 of color information pertaining to a base image. Digital representations 12 and 14 may be in any suitable representation format such as 8 bits per color component, 3 color components (such as R, G and B) per pixel.

Global storage device 10 also stores a digital representation 16 of relatively high depth transparency information, such as 8 bits per pixel. The relatively high depth of the transparency information is required for output onto certain substrates such as film. The transparency information, in conjunction with digital color representations 12 and 14, defines a combined image.

Any suitable method or apparatus may provide digital representations 12, 14 and 16. For example, digital representations 12 and 14 may be scanned from the corresponding color images, using a conventional scanner such as the Smart Scanner, commercially available from Scitex Corporation, Herzlia, Israel, or alternatively may be created using a conventional system such as a Prisma, commercially available from Scitex Corporation, Herzlia, Israel. Digital representation 16 may be created on the Prisma, using the CT-create function.

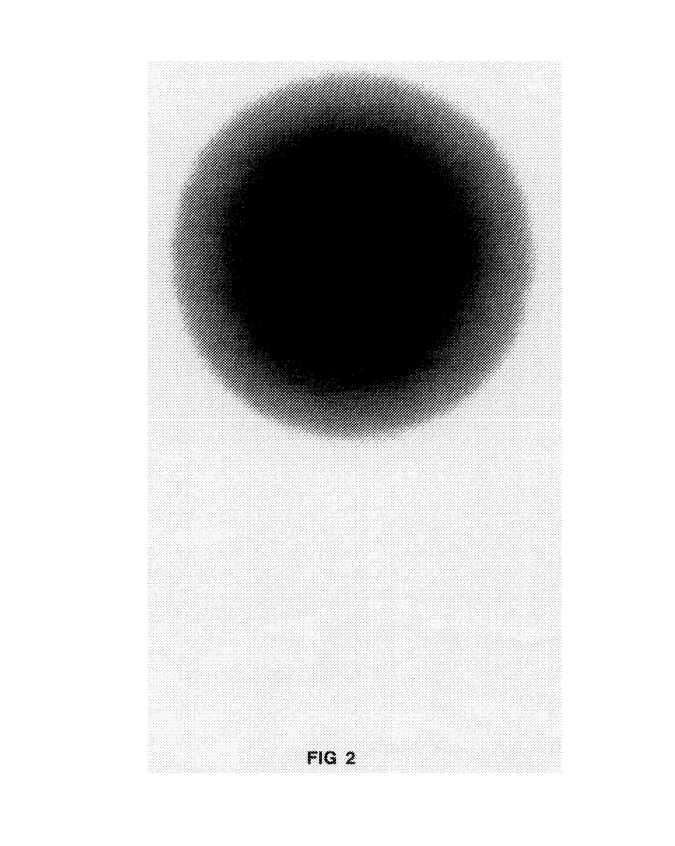

Reference is made to Fig. 2 which is a pictorial representation of sample digital transparency information. The digital transparency information which Fig. 2 represents and from which Fig. 2 was derived comprised a 768 row digital file, each row including 1024 pixels, each pixel being represented in 8 bits, however any suitable representation format for the digital transparency information may alternatively be employed. In Fig. 2, white represents complete transparency of the top image to the base image, which corresponds to an 8-bit digital value of 0, and black represents complete opaqueness of the top image to the base image, which corresponds to an 8-bit digital value of 255. More generally, in Fig. 2, the lighter a location is, the more transparent the top image is to the base image at that location.

The transparency information of Fig. 2 has the configuration of a radial vignette. In other words, the digital transparency values of the various portions of the top image increase linearly with the distances of those portions from the center of the top image, and the central portion of the top image is completely opaque to the base image. The radial configuration of Fig. 2 was selected merely to clarify the present invention and is not intended to be limiting. The teachings of the present invention are suited to implementing a display of a combined image constructed on the basis of substantially any transparency information.

Referring back to Fig. 1, a data processing unit 18 such as the CPU of the Prisma system reads top image and base image representations 12 and 14 and transparency information 16 from global storage unit 10. The data processing unit 18 comprises a representation depth reducing unit 20 which is operative to reduce the depth of the transparency representation 16 from its initial depth which, in the present example, is 8 bits per pixel, to a smaller depth, such as 2 bits per pixel, thereby to provide a reduced-depth representation 22 of the transparency information. The reduced-depth transparency information 22 and the digital representations 12 and 14 of the top and base images respectively are stored in display memory 24.

Any suitable method may be used to reduce the depth of representation of the transparency information. The transparency information may be reduced to 4 levels, corresponding to a 2-bit digital representation, or alternatively the transparency information may be reduced to any other suitable number of levels, such as 8 levels, corresponding to a 3-bit digital representation.

Conventional methods of spatial dithering, such as error diffusion and order dithering, all of which are useful for reducing depth of representation, are discussed in the following volume, the disclosure of which is incorporated herein by reference:

Ulichney, Robert, Digital Halftoning, MIT Press, Cambridge MA, USA, 1987

A preferred method for reducing the depth of representation of the transparency information is error diffusion, which is discussed in pp. 239-242 of the above reference. These pages are appended hereto and are referenced Appendix A.

Any suitable error filter may be employed in implementing the error diffusion algorithm, such as the error filter illustrated in Fig. 8.6 (a) of Appendix A, which is discussed in detail in the following publications, the disclosures of which are incorporated herein by reference:

"Adaptive algorithm for spatial gray scale", Floyd, R. W. and Steinberg, L., SID Int. Sym. Digest of Tech. Papers, pp. 36-37, 1975: and

"An adaptive algorithm for spatial grayscale", Floyd, R. W. and Steinberg, L. Proc. SID, Vol. 17/2, pp. 75-77, 1976.

The reduced depth transparency information 22 along with top image and base image digital representations 12 and 14, are accessed by display control unit 26 which is operative to compute a digital representation of the combined image. Any suitable formula may be used by display control unit 26 to compute the combined image, such as the following conventional formula:

$$(R_3,G_3,B_3) = t/3\,(R_1,G_1,B_1) + (1 - t/3)\,(R_2,G_2,B_2)$$

where

$(R_3,G_3,B_3)$ = the RGB value of a pixel of the combined image t = the transparency of the pixel. In this example, t may be one of the following four values: 0, 1, 2 and 3. 0 corresponds to complete opaqueness (no transparency) of the top image to the base image and 3 corresponds to complete transparency of the top image to the base image.

$(R_1,G_1,B_1)$ = the RGB value of the base image.

$(R_2,G_2,B_2)$ = the RGB value of the top image.

The digital representation of the combined image may then be displayed on a high resolution color display 28 such as a CAD.

Examples:

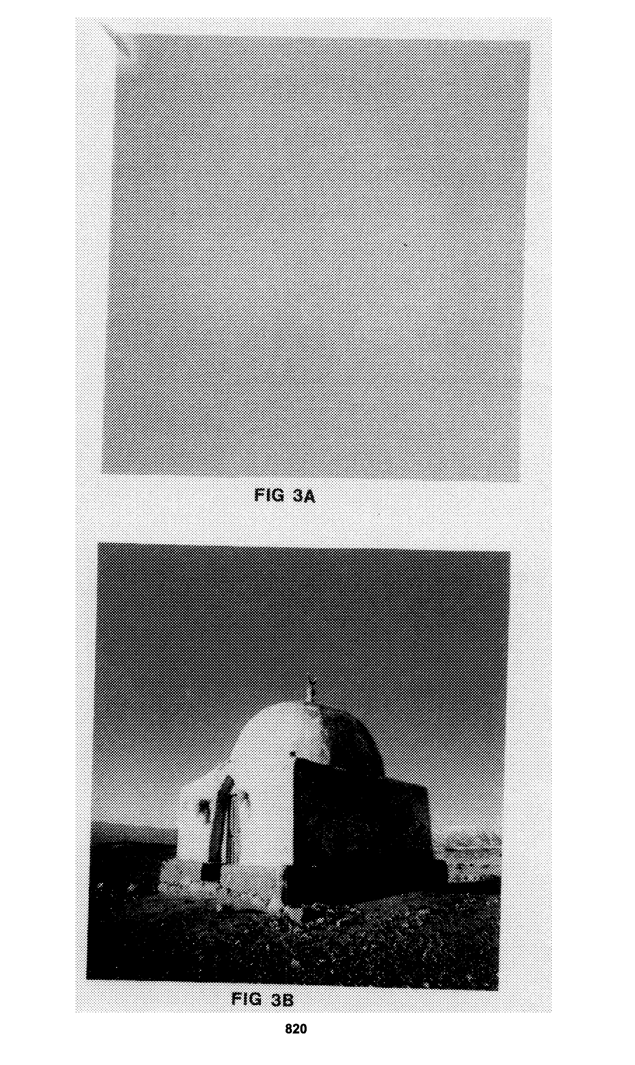

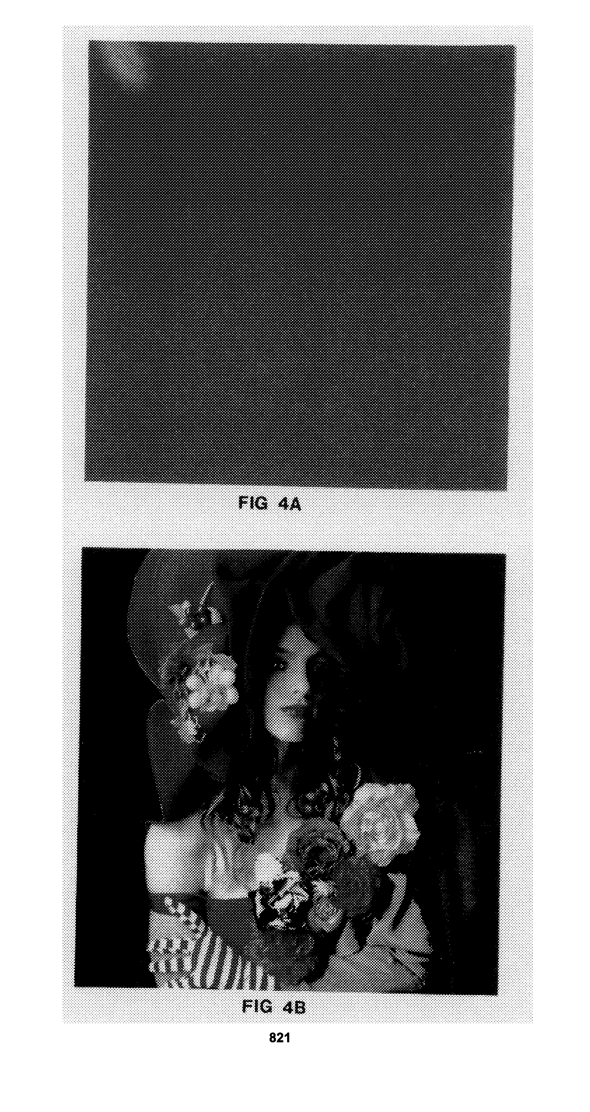

Figs. 3A and 3B are sample base images. Figs. 4A and 4B are sample top images. Fig. 5A is a colored illustration of the red solid top image of Fig. 4A, superimposed on the yellow solid base image of Fig. 3A, in accordance with the transparency information of Fig. 2. As seen, the combined image of Fig. 5A is yellow at the periphery, due to the relative transparency of Fig. 2 at the periphery, and is red at the center, due to the relative opaqueness of Fig. 2 at the center.

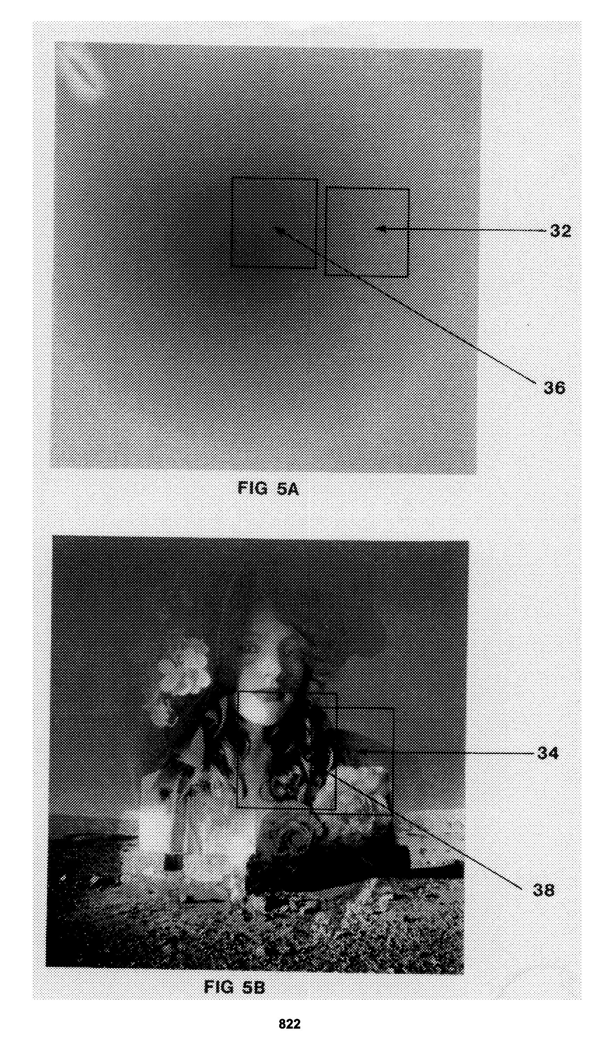

Fig. 5B is a colored illustration of the top image of Fig. 4B, superimposed on the base image of Fig. 3B, in accordance with the transparency information of Fig 2. As seen, the combined image of Fig. 5B is characterized in that the image of the building of Fig. 3B appears more clearly than the image of the woman's face of Fig. 4B at the periphery of Fig. 5B, due to the relative transparency of Fig. 2 at the periphery. Conversely, the image of the building of Fig. 3B appears less clearly than does the image of the woman's face of Fig. 4B at the center of Fig. 5B, due to the relative opaqueness of Fig. 2 at the center.

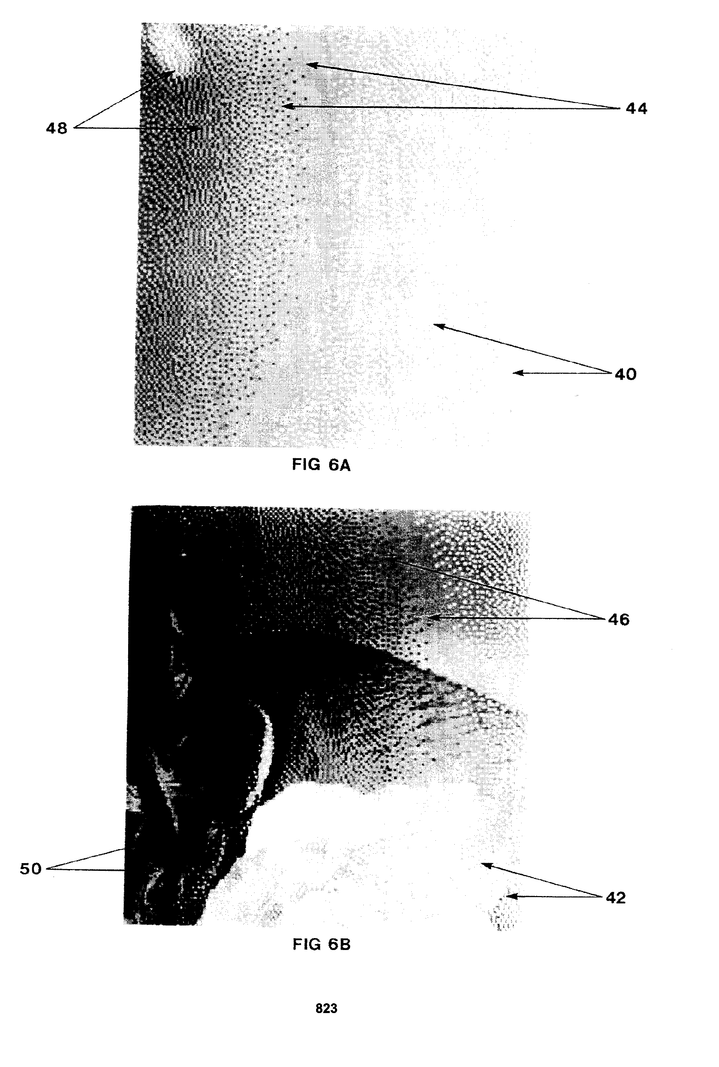

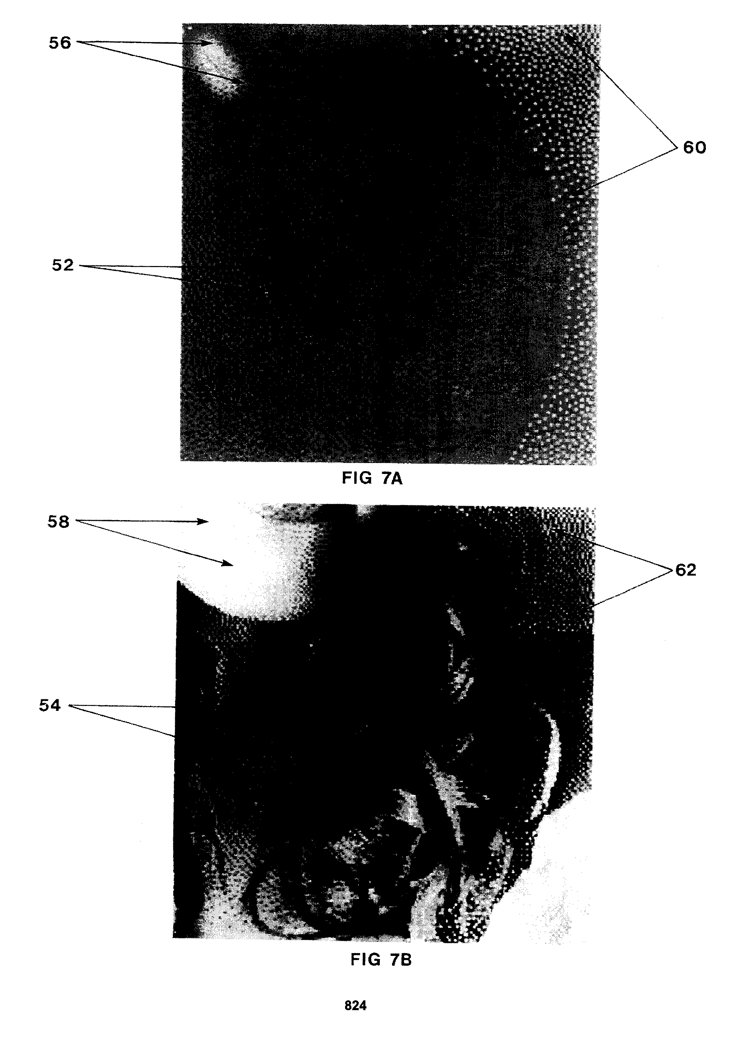

Reference is now made to Figs. 6A-6B and 7A-7B which are enlarged colored illustrations of portions of the top components of Figs. 5A and 5B. It may be appreciated from a comparison of Figs. 6A and 7A to Fig. 5A, and from a comparison of Figs. 6B and 7B to Fig. 5B, that, although from normal viewing distance, corresponding to the non-enlarged scale of Figs. 5A and 5B, the appearances of the combined images are generally smooth, in fact, only a small number of transparency levels need be employed in each in order to provide the smooth appearance. In the illustrated example, only 4 transparency levels are provided for each combined image, as explained in detail below with specific reference to each of Figs. 6A, 6B, 7A and 7B. The small number of transparency levels is apparent only when portions of the combined images are viewed in magnified scale, as in Figs. 6A, 6B, 7A and 7B, corresponding to a smaller-than-normal viewing distance of the combined images.

Reference is now made specifically to Figs. 6A and 6B. Fig. 6A is an enlarged colored illustration of a peripheral portion, whose approximate location is indicated in Fig. 5A by reference numeral 32, of the top image component of Fig. 5A. Fig. 6B is an enlarged colored illustration of a peripheral portion, whose approximate location is indicated in Fig. 5B by reference numeral 34, of the top image component of Fig. 5B.

Each of peripheral portions 32 and 34, when enlarged as in Figs. 6A and 6B respectively, may be seen to include only 3 transparency levels. Specifically, some locations such as locations 40 in Fig. 6A and locations 42 in Fig. 6B are white, corresponding to locations at which the top image is completely transparent to the base image and therefore does not appear. Other locations such as locations 44 in Fig. 6A and locations 46 in Fig. 6B are almost white, corresponding to locations at which the top image is 2/3 transparent to the base image and therefore appears very faintly. A small number of locations, such as locations 48 in Fig. 6A and locations 50 in Fig. 6B correspond to locations at which the top image is only 1/3 transparent to the base image and therefore appears at almost full strength (2/3 strength).

Reference is now made to Figs. 7A and 7B. Fig. 7A is an enlarged colored illustration of a central portion, whose approximate location is indicated in Fig. 5A by reference numeral 36, of the top image component of Fig. 5A. Fig. 7B is an enlarged colored illustration of a central portion, whose approximate location is indicated in Fig. 5B as reference numeral 38, of the top image component of Fig. 5B.

Each of peripheral portions 36 and 38, when enlarged as in Figs. 7A and 7B respectively, may be seen to include only 3 transparency levels, two of which are included among the 3 transparency levels employed in Figs. 6A and 6B, making a total of only 4 transparency levels for each of the combined images of Figs. 5A and 5B respectively. Specifically, some locations such as locations 52 in Fig. 7A and locations 54 in Fig. 7B correspond to locations at which the top image is completely opaque to the base image and therefore the top image appears at full strength. Other locations such as locations 56 in Fig. 7A and locations 58 in Fig. 7B correspond to locations at which the top image is 2/3 opaque to the base image and therefore, at these locations, the top image appears relatively clearly whereas the base image appears relatively faintly. A small number of locations such as locations 60 in Fig. 7A and locations 62 in Fig. 7B correspond to locations at which the top image is only 1/3 opaque to the base image. At these locations, the base image is visible at almost full strength and the top image is barely visible.

The present invention is believed to be operative due to the properties of the human eye. In the human eye, adjacent light receptors are not independent but rather interact such that, according to the present findings, a relatively smooth combined image is perceived even when a relatively small number of transparency levels are provided, such as only 4 transparency levels, corresponding to a 2 bit representation.

For example, if it is desired that, in a certain relatively small location, which is small enough to be perceived by interacting light receptors in the human eye, the top image be perceived to be 67% transparent to the base image, it is not necessary, in accordance with the present invention, to provide each pixel with a color value which is a combination of 33% of the top image and 67% of the base image. Rather, it is sufficient that the average color value taken over the pixels within the relatively small location be equal to a combination of 33% of the color value of the top image within the relatively small location and 67% of the color value of the base image within the relatively small location.

In other words, the perceived quality of a combined image having only 4 transparency levels is comparable, at normal viewing distance, to the perceived quality of a combined image having a far greater number of transparency levels, such as 256 transparency levels. Therefore, the number of transparency levels provided may be reduced substantially, without substantially affecting the quality of the combined image as perceived by the human eye.

It is appreciated that display apparatus constructed and operative in accordance with the teachings of the present specification may be useful in various applications, such as in an image retouching system.

A computer listing of a software implementation of an embodiment of the present invention is appended hereto and is referenced Appendix B. The computer listing of Appendix B, in conjunction with the prisma system, loaded with Prisma software version 5, commercially available from Scitex Corporation, Herzlia, Israel, is operative to display a high-quality representation of a combined image on a screen, the combined image being defined by a base image, a top image and predetermined transparency information, the displayed representation being derived from a relatively low depth digital representation of the transparency information. It is appreciated that, in accordance with the present invention, the transparency information need not be predetermined and is preferably user-selected.

The operation of the Prisma system generally is explained in its user manual. To load the software of Appendix B onto the Prisma system, the listing of Appendix B is converted into magnetic tape format and then loaded onto the Prisma via the tape drive. After the "exit to RMX" command is selected on the Prisma system, the following four commands are entered via the terminal:

```
cd :user:tmp
ad mt as a p
restore a over :user:tmp/ct
copy :user:tmp/ct over :sd:prisma/system/dir7/ct
```

It is appreciated that the present invention is applicable in conjunction with any suitable interactive workstation, and the above implementation which employs the Prisma is provided merely by way of example.

It will be appreciated by persons skilled in the art that the present invention is not limited to what has been particularly shown and described hereinabove. Rather, the scope of the present invention is defined only by the claims that follow:

## APPENDIX A

*8.2. THE ERROR DIFFUSION ALGORITHM*                    239

$J[n]$ ——————→ | Threshold | ——————→ $I[n]$

Figure 8.4: Point Processes.

# 8.2   The Error Diffusion Algorithm

Up to this point, all of the halftone processes considered could be modeled as shown in Figure 8.4. All were point processes, that is, the output depends only on the current input pixel. Pixels of the continuous-tone or m-ary digital image, $J[n]$, are simply compared with a threshold to determine the state of the output pixels, $I[n]$.

The error diffusion algorithm, first introduced by Floyd and Steinberg in 1975 [20,21], requires neighborhood operations and is thus more computationally intensive. It is currently the most popular neighborhood halftoning process and has received considerable attention in spite of some shortcomings. A generic form of this algorithm is graphically illustrated in Figure 8.5.

The threshold in this case is fixed at $\frac{1}{2}$ where the input, $J[n]$, varies as usual from $g = 0$ (white) to $g = 1$ (black). The resulting binary output value of 0 or 1 is compared with the original gray level value. The difference is suitably called the "error" for location n. The signal consisting of past error values is passed through an error filter, $e[n]$, to produce a correction factor to be added to future input values. Errors are thus "diffused" over a weighted neighborhood determined by $e[n]$.

Figure 8.6 summarizes error filter impulse responses promoted in the literature. Note that in all cases the values are deterministic and sum to 1 so that errors are neither amplified nor reduced. The first three listed are designed for rectangular grids and will be examined in both the spatial and frequency domain in this section. The error filter in (d) is intended for use on a hexagonal grid; it will be similarly addressed in section 8.4.

$J[n]$ → (+) → Threshold → $I[n]$

Error Filter $e[n]$

"error"

Figure 8.5: The Error Diffusion Algorithm.

$$\left(\frac{1}{16}\times\right) \qquad \begin{array}{ccc} & \bullet & 7 \\ 3 & 5 & 1 \end{array}$$

(a) Floyd and Steinberg (1975) [20,21].

$$\left(\frac{1}{48}\times\right) \qquad \begin{array}{ccccc} & & \bullet & 7 & 5 \\ 3 & 5 & 7 & 5 & 3 \\ 1 & 3 & 5 & 3 & 1 \end{array}$$

(b) Jarvis, Judice and Ninke (1976) [36].

$$\left(\frac{1}{42}\times\right) \qquad \begin{array}{ccccc} & & \bullet & 8 & 4 \\ 2 & 4 & 8 & 4 & 2 \\ 1 & 2 & 4 & 2 & 1 \end{array}$$

(c) Stucki (1981) [80].

$$\left(\frac{1}{200}\times\right) \qquad \begin{array}{cccc} & & \bullet & 32 \\ 12 & 26 & 30 & 16 \\ & 12 & 26 & 12 \\ 5 & 12 & 12 & 5 \end{array}$$

(d) Stevenson and Arce (1985) [76].

**Figure 8.6:** Error Filters reported in the Literature.
(a), (b) and (c) are for rectangular grids.
(d) is for hexagonal grids.

("•" represents the origin.)

The original error filter or set of "weights" suggested by Floyd and Steinberg is shown in Figure 8.6(a). They argued that a filter with four elements was the smallest number that could produce "good" results. The values were chosen to particularly assure the checkerboard pattern at middle gray.

Figure 8.7 shows the effect of error diffusion with the Floyd and Steinberg filter for (a) the gray scale ramp, (b) scanned picture, and (c) the synthesized image. The reason for the popularity of this algorithm is clear; several gray levels are represented by pleasingly isotropic, structureless distributions of dots. However, some shortcomings are also apparent:

1. Correlated artifacts in many of the gray level patterns. This can best be seen in the gray scale ramp.

2. Directional hysteresis due to the raster order of processing. This artifact is most apparent in very light and very dark patterns. Note the light regions of the sky in the scanned picture, the highlight in the egg shaped object and the dark squares of the synthesized image.

3. Transient behavior near edges or boundaries. A good example of this is in the rendering of the fixed background at the top and left edges of the synthesized image.

The radially averaged power spectrum, $P_r(f_r)$, and anisotropy measure, $s^2(f_r)/P_r^2(f_r)$ (described in section 3.2.2) are plotted for selected gray levels in Figure 8.8 on pages 246 through 252. In each case here and throughout this chapter, the principal frequency, $f_g$, is marked with a small diamond on the frequency axis of the power spectrum.

The lack of symmetry in these patterns is strongly acknowledged in the anisotropy measure, especially for (d) $g = \frac{1}{4}$ and (e) $g = \frac{1}{2}$. Recall that the "background noise limit" due to the spectral estimation method is $-10$ dB (equation (3.33)) indicated by a reference line at that level. Any measure greater than 0 dB at any frequency indicates an especially anisotropic pattern; at such a level the sample variance is greater than the square of the average.

# APPENDIX B

```
41 46 00 02 34 0A 00 08 5D F5 00 B9 02 06 01 FE -- 000000
66 49 00 00 EC AC 00 00 85 90 00 00 00 1C 00 00 -- 000010
00 00 00 00 00 00 00 00 00 00 00 00 00 00 08 6F -- 000020
04 00 00 00 03 00 00 00 08 00 00 00 00 00 00 00 -- 000030
00 00 00 00 00 5C 00 00 02 01 00 00 00 98 00 00 -- 000040
00 00 00 00 00 00 00 00 00 00 00 00 00 00 00 00 -- 000050
00 0F FF F0 00 00 10 00 00 03 00 00 00 00 00 00 -- 000060
00 00 00 00 00 00 00 00 00 00 00 00 00 00 00 00 -- 000070
00 00 00 00 00 00 00 00 00 00 00 00 00 00 00 00 -- 000080
00 00 00 00 00 00 00 00 00 00 00 00 00 00 00 00 -- 000090
3A 32 32 3A 31 31 31 39 2F 39 31 2F 38 30 00 00 -- 0000A0
45 50 50 41 4D 20 36 38 32 58 50 41 69 14 39 35 -- 0000B0
00 00 0F 00 01 CC 5A 7F DF 32 2E 33 56 20 2C 52 -- 0000C0
00 00 00 00 00 0D 72 00 00 00 02 00 00 8A 9C 00 -- 0000D0
00 00 00 00 00 00 00 00 00 00 00 00 00 00 00 00 -- 0000E0
00 00 00 00 00 00 00 00 00 00 00 00 00 00 00 00 -- 0000F0
00 00 00 00 00 00 00 00 00 00 00 00 00 00 00 00 -- 000100
00 00 00 00 00 00 00 00 00 00 00 00 00 00 00 00 -- 000110
00 00 00 00 00 00 00 00 00 00 00 00 00 00 00 00 -- 000120
00 00 00 00 00 00 00 00 00 00 00 00 00 00 00 00 -- 000130
00 00 00 00 00 00 00 00 00 00 00 00 00 00 00 00 -- 000140
00 00 00 00 00 00 00 00 00 00 00 00 00 00 00 00 -- 000150
00 00 00 00 00 00 00 00 00 00 00 00 00 00 00 00 -- 000160
00 00 00 00 00 00 00 00 00 00 00 00 00 00 00 00 -- 000170
00 00 00 00 00 00 00 00 00 00 00 00 00 00 00 00 -- 000180
00 00 00 00 00 00 00 00 00 00 00 00 00 00 00 00 -- 000190
00 00 00 00 00 00 00 00 00 00 00 00 00 00 00 00 -- 0001A0
00 00 00 00 00 00 00 00 00 00 00 00 00 00 00 00 -- 0001B0
00 00 00 00 00 00 00 00 00 00 00 00 00 00 00 00 -- 0001C0
00 00 00 00 00 00 00 00 00 00 00 00 00 00 00 00 -- 0001D0
00 00 00 00 00 00 00 00 00 00 00 00 00 00 00 00 -- 0001E0
00 00 00 00 00 00 00 00 00 00 00 00 00 00 00 00 -- 0001F0
00 00 00 00 00 00 00 00 00 00 00 00 00 00 01 FE -- 000200
00 00 00 00 00 00 00 00 00 00 00 00 00 00 00 00 -- 000210
00 00 00 00 00 00 00 00 00 00 00 00 00 00 00 00 -- 000220
00 00 00 00 00 00 00 00 00 00 00 00 00 00 00 00 -- 000230
00 00 00 00 00 00 00 00 00 00 00 00 00 00 00 00 -- 000240
00 00 00 00 00 00 00 00 00 00 00 00 00 00 00 00 -- 000250
00 00 00 00 00 00 00 00 00 00 00 00 00 00 00 00 -- 000260
00 00 00 00 00 00 00 00 00 00 00 00 00 00 00 00 -- 000270
00 00 00 00 00 00 00 00 00 00 00 00 00 00 00 00 -- 000280
00 00 00 00 00 00 00 00 00 00 00 00 00 00 00 00 -- 000290
00 00 00 00 00 00 00 00 00 00 00 00 00 00 00 00 -- 0002A0
00 00 00 00 00 00 00 00 00 00 00 00 00 00 00 00 -- 0002B0
00 00 00 00 00 00 00 00 00 00 00 00 00 00 00 00 -- 0002C0
00 00 00 00 00 00 00 00 00 00 00 00 00 00 00 00 -- 0002D0
00 00 00 00 00 00 00 00 00 00 00 00 00 00 00 00 -- 0002E0
00 00 00 00 00 00 00 00 00 00 00 00 00 00 00 00 -- 0002F0
00 00 00 00 00 00 00 00 00 00 00 00 00 00 00 00 -- 000300
00 00 00 00 00 00 00 00 00 00 00 00 00 00 00 00 -- 000310
00 00 00 00 00 00 00 00 00 00 00 00 00 00 00 00 -- 000320
00 00 00 00 00 00 00 00 00 00 00 00 00 00 00 00 -- 000330
00 00 00 00 00 00 00 00 00 00 00 00 00 00 00 00 -- 000340
00 00 00 00 00 00 00 00 00 00 00 00 00 00 00 00 -- 000350
00 00 00 00 00 00 00 00 00 00 00 00 00 00 00 00 -- 000360
00 00 00 00 00 00 00 00 00 00 00 00 00 00 00 00 -- 000370
00 00 00 00 00 00 00 00 00 00 00 00 00 00 00 00 -- 000380
00 00 00 00 00 00 00 00 00 00 00 00 00 00 00 00 -- 000390

00 00 00 00 00 00 00 00 00 00 00 00 00 00 00 00 -- 0003A0
```

```
00 00 00 00 00 00 00 00 00 00 00 00 00 00 00 00 -- 0003B0
00 00 00 00 00 00 00 00 00 00 00 00 00 00 00 00 -- 0003C0
00 00 00 00 00 00 00 00 00 00 00 00 00 00 00 00 -- 0003D0
00 00 00 00 00 00 00 00 00 00 00 00 00 00 00 00 -- 0003E0
00 00 00 00 00 00 00 00 00 00 00 00 00 00 00 00 -- 0003F0
00 97 00 00 00 00 00 00 00 00 00 00 00 00 01 FE -- 000400
FF FE 00 00 9A 00 00 00 FF F6 00 00 92 00 00 00 -- 000410
FF FA 00 00 92 00 00 00 FF FE 00 00 9A 00 00 00 -- 000420
FF FE 00 00 9A 00 00 00 FF F6 00 00 9A 00 00 00 -- 000430
FF FE 00 00 9A 00 00 00 FF F6 00 00 92 00 00 00 -- 000440
FF FA 00 00 9A 00 00 00 FF FC 00 00 9A 00 00 00 -- 000450
34 0C 00 00 9A 00 00 00 5D 30 00 00 9A 00 00 00 -- 000460
00 54 00 00 92 00 00 00 41 35 00 00 92 00 00 00 -- 000470
00 1C 00 00 9A 00 00 00 00 87 00 00 9A 00 00 00 -- 000480
00 00 00 00 92 00 00 00 00 02 00 00 9A 00 00 00 -- 000490
00 00 00 00 00 00 00 00 00 00 00 00 00 00 00 00 -- 0004A0
00 00 00 00 00 00 00 00 00 00 00 00 00 00 00 00 -- 0004B0
00 00 00 00 00 00 00 00 00 00 00 00 00 00 00 00 -- 0004C0
00 00 00 00 00 00 00 00 00 00 00 00 00 00 00 00 -- 0004D0
00 00 00 00 00 00 00 00 00 00 00 00 00 00 00 00 -- 0004E0
00 00 00 00 00 00 00 00 00 00 00 00 00 00 00 00 -- 0004F0
00 00 00 00 00 00 00 00 00 00 00 00 00 00 00 00 -- 000500
00 00 00 00 00 00 00 00 00 00 00 00 00 00 00 00 -- 000510
00 00 00 00 00 00 00 00 00 00 00 00 00 00 00 00 -- 000520
00 00 00 00 00 00 00 00 00 00 00 00 00 00 00 00 -- 000530
00 00 00 00 00 00 00 00 00 00 00 00 00 00 00 00 -- 000540
00 00 00 00 00 00 00 00 00 00 00 00 00 00 00 00 -- 000550
00 00 00 00 00 00 00 00 00 00 00 00 00 00 00 00 -- 000560
00 00 00 00 00 00 00 00 00 00 00 00 00 00 00 00 -- 000570
00 00 00 00 00 00 00 00 00 00 00 00 00 00 00 00 -- 000580
00 00 00 00 00 00 00 00 00 00 00 00 00 00 00 00 -- 000590
00 00 00 00 00 00 00 00 00 00 00 00 00 00 00 00 -- 0005A0
00 00 00 00 00 00 00 00 00 00 00 00 00 00 00 00 -- 0005B0
00 00 00 00 00 00 00 00 00 00 00 00 00 00 00 00 -- 0005C0
00 00 00 00 00 00 00 00 00 00 00 00 00 00 00 00 -- 0005D0
00 00 00 00 00 00 00 00 00 00 00 00 00 00 00 00 -- 0005E0
00 00 00 00 00 00 00 00 00 00 00 00 00 00 00 00 -- 0005F0
00 00 00 00 00 00 00 00 00 00 00 00 00 00 01 FE -- 000600
00 00 00 00 00 00 00 00 00 00 00 00 00 00 00 00 -- 000610
00 00 00 00 00 00 00 00 00 00 00 00 00 00 00 00 -- 000620
00 00 00 00 00 00 00 00 00 00 00 00 00 00 00 00 -- 000630
00 00 00 00 00 00 00 00 00 00 00 00 00 00 00 00 -- 000640
00 00 00 00 00 00 00 00 00 00 00 00 00 00 00 00 -- 000650
00 00 00 00 00 00 00 00 00 00 00 00 00 00 00 00 -- 000660
00 00 00 00 00 00 00 00 00 00 00 00 00 00 00 00 -- 000670
00 00 00 00 00 00 00 00 00 00 00 00 00 00 00 00 -- 000680
00 00 00 00 00 00 00 00 00 00 00 00 00 01 00 00 -- 000690
00 00 00 00 00 00 00 00 00 00 00 00 00 00 00 00 -- 0006A0
00 00 00 00 00 00 00 00 00 00 00 00 00 00 00 00 -- 0006B0
00 00 00 00 00 00 00 00 00 00 00 00 00 00 00 00 -- 0006C0
00 00 00 00 00 00 00 00 00 00 00 00 00 00 00 00 -- 0006D0
00 00 00 00 00 00 00 00 00 00 00 00 00 00 00 00 -- 0006E0
00 00 00 00 00 00 00 00 00 00 00 00 00 00 00 00 -- 0006F0
00 00 00 00 00 00 00 00 00 00 00 00 00 00 00 00 -- 000700
00 00 00 00 00 00 00 00 00 00 00 00 00 00 00 00 -- 000710
00 00 00 00 00 00 00 00 00 00 00 00 00 00 00 00 -- 000720
00 00 00 00 00 00 00 00 00 00 00 00 00 00 00 00 -- 000730

00 00 00 00 00 00 00 00 00 00 00 00 00 00 00 00 -- 000740
00 00 00 00 00 00 00 00 00 00 00 00 00 00 00 00 -- 000750
```

```
00 00 00 00 00 00 00 00 00 00 00 00 00 00 00 00 -- 000760
00 00 00 00 00 00 00 00 00 00 00 00 00 00 00 00 -- 000770
00 00 00 00 00 00 00 00 00 00 00 00 00 00 00 00 -- 000780
00 00 00 00 00 00 00 00 00 00 00 00 00 00 00 00 -- 000790
00 00 00 00 00 00 00 00 00 00 00 00 00 00 00 00 -- 0007A0
00 00 00 00 00 00 00 00 00 00 00 00 00 00 00 00 -- 0007B0
00 00 00 00 00 00 00 00 00 00 00 00 00 00 00 00 -- 0007C0
00 00 00 00 00 00 00 00 00 00 00 00 00 00 00 00 -- 0007D0
00 00 00 00 00 00 00 00 00 00 00 00 00 00 00 00 -- 0007E0
00 00 00 00 00 00 00 00 00 00 00 00 00 00 00 00 -- 0007F0
00 01 00 00 00 00 00 00 00 00 00 00 00 00 01 FE -- 000800
00 00 00 00 00 00 00 00 00 00 00 00 00 00 00 00 -- 000810
00 02 00 00 00 00 00 00 00 00 00 00 00 00 00 00 -- 000820
00 00 00 00 00 00 00 00 00 00 00 00 00 00 00 00 -- 000830
00 14 80 08 00 01 00 00 00 00 00 00 00 00 00 00 -- 000840
00 00 00 00 FF F7 00 00 FF F6 00 00 0C 00 00 00 -- 000850
00 1C 80 08 00 01 00 00 00 00 00 00 00 00 00 00 -- 000860
00 00 00 00 FF FF 00 00 FF FE 00 01 0C 00 00 00 -- 000870
00 24 80 00 00 02 00 00 00 00 00 00 00 00 00 00 -- 000880
00 00 00 00 FF FF 00 00 FF FE 00 02 0C 00 00 00 -- 000890
00 2C 80 08 00 01 00 00 00 00 00 00 00 00 00 00 -- 0008A0
00 00 00 00 FF FB 00 00 FF FA 00 03 0C 00 00 00 -- 0008B0
00 34 80 08 00 01 00 00 00 00 00 00 00 00 00 00 -- 0008C0
00 00 00 00 FF F7 00 00 FF F6 00 04 0C 00 00 00 -- 0008D0
00 3C 80 00 00 02 00 00 00 00 00 00 00 00 00 00 -- 0008E0
00 00 00 00 FF FF 00 00 FF FE 00 05 0C 00 00 00 -- 0008F0
00 44 80 08 00 01 00 00 00 00 00 00 00 00 00 00 -- 000900
00 00 00 00 FF F7 00 00 FF F6 00 06 0C 00 00 00 -- 000910
00 4C 80 08 00 01 00 00 00 00 00 00 00 00 00 00 -- 000920
00 00 00 00 FF FF 00 00 FF FE 00 07 0C 00 00 00 -- 000930
00 54 80 08 00 01 00 00 00 00 00 00 00 00 00 00 -- 000940
00 00 00 00 FF FD 00 00 FF FC 00 08 0C 00 00 00 -- 000950
00 5C 80 08 00 01 00 00 00 00 00 00 00 00 00 00 -- 000960
00 00 00 00 FF FB 00 00 FF FA 00 09 0C 00 00 00 -- 000970
00 64 80 08 00 01 00 00 00 00 00 00 00 00 00 00 -- 000980
00 00 00 00 5D 31 00 00 5D 30 00 0A 0C 00 00 00 -- 000990
00 6C 80 00 00 02 00 00 00 00 00 00 00 00 00 00 -- 0009A0
00 00 00 00 34 0D 00 00 34 0C 00 0A 6C 00 00 00 -- 0009B0
00 74 80 00 00 02 00 00 00 00 00 00 00 00 00 00 -- 0009C0
00 00 00 00 41 36 00 00 00 00 00 00 00 00 00 00 -- 0009D0
00 7C 80 08 00 01 00 00 00 00 00 00 00 00 00 00 -- 0009E0
00 00 00 00 00 55 00 00 00 54 00 0A A4 00 00 00 -- 0009F0
80 08 00 01 00 00 00 00 00 00 00 00 00 00 01 FE -- 000A00
00 00 00 88 00 00 00 87 00 0A A8 00 00 00 00 84 -- 000A10
80 08 00 01 00 00 00 00 00 00 00 00 00 00 00 00 -- 000A20
00 00 00 1D 00 00 00 1C 00 0A AC 00 00 00 00 8C -- 000A30
80 00 00 02 00 00 00 00 00 00 00 00 00 00 00 00 -- 000A40
00 00 00 03 00 00 00 02 00 0A B0 00 00 00 00 94 -- 000A50
00 00 00 41 00 00 00 00 00 00 00 00 00 00 00 00 -- 000A60
00 00 00 2C 00 00 00 2C 00 0A B0 02 00 00 00 14 -- 000A70
00 00 00 42 00 00 00 00 00 00 00 00 00 00 00 00 -- 000A80
00 00 85 90 00 00 85 90 00 0A B0 2E 00 00 00 15 -- 000A90
00 00 00 43 00 00 00 00 00 00 00 00 00 00 00 00 -- 000AA0
00 00 00 DE 00 00 00 DE 00 0B 35 BE 00 00 00 16 -- 000AB0
00 00 00 44 00 00 00 00 00 00 00 00 00 00 00 00 -- 000AC0
00 00 00 1C 00 00 00 1C 00 0B 36 9C 00 00 00 17 -- 000AD0

00 00 00 45 00 00 00 00 00 00 00 00 00 00 00 00 -- 000AE0
00 00 56 F8 00 00 56 F8 00 0B 36 B8 00 00 00 18 -- 000AF0
00 00 00 00 00 00 00 00 00 00 00 00 00 00 00 00 -- 000B00
```

```
00 00 00 00 00 00 00 00 00 00 00 00 00 00 00 00 -- 000B10
00 00 00 00 00 00 00 00 00 00 00 00 00 00 00 00 -- 000B20
00 00 00 00 00 00 00 00 00 00 00 00 00 00 00 00 -- 000B30
00 00 00 00 00 00 00 00 00 00 00 00 00 00 00 00 -- 000B40
00 00 00 00 00 00 00 00 00 00 00 00 00 00 00 00 -- 000B50
00 00 00 00 00 00 00 00 00 00 00 00 00 00 00 00 -- 000B60
00 00 00 00 00 00 00 00 00 00 00 00 00 00 00 00 -- 000B70
00 00 00 00 00 00 00 00 00 00 00 00 00 00 00 00 -- 000B80
00 00 00 00 00 00 00 00 00 00 00 00 00 00 00 00 -- 000B90
00 00 00 00 00 00 00 00 00 00 00 00 00 00 00 00 -- 000BA0
00 00 00 00 00 00 00 00 00 00 00 00 00 00 00 00 -- 000BB0
00 00 00 00 00 00 00 00 00 00 00 00 00 00 00 00 -- 000BC0
00 00 00 00 00 00 00 00 00 00 00 00 00 00 00 00 -- 000BD0
00 00 00 00 00 00 00 00 00 00 00 00 00 00 00 00 -- 000BE0
00 00 00 00 00 00 00 00 00 00 00 00 00 00 00 00 -- 000BF0
57 56 00 00 00 00 00 00 00 00 00 00 00 00 01 FE -- 000C00
C5 2E 00 14 59 38 9A 00 54 C8 1C 9A 00 00 02 C8 -- 000C10
00 01 05 C7 61 A2 3E C5 2E 00 01 05 C7 61 9E 3E -- 000C20
05 C7 61 AA 3E C5 2E 00 00 05 C7 61 A6 3E C5 2E -- 000C30
61 B2 3E C5 2E 00 01 05 C7 61 AE 3E C5 2E 00 01 -- 000C40
C5 2E 11 74 00 3D 83 61 B6 3E C5 2E 00 01 05 C7 -- 000C50
9A 00 14 54 C8 9A 05 7E 00 02 3D 05 8B 61 BA 3E -- 000C60
61 BE 3E C5 2E 05 8B 61 BA 3E C5 2E 00 14 56 4D -- 000C70
61 C6 3E C5 2E 00 00 05 C7 61 C2 3E C5 2E 05 89 -- 000C80
CE 3E 03 2E 4F 3D 8B 61 CA 3E C5 2E 00 00 05 C7 -- 000C90
36 C4 2E FE 46 89 E4 2A 05 8A 61 D0 1E 8E 2E 61 -- 000CA0
8A 02 5C 8E 26 3C 03 26 F8 8B 24 FE 46 6B 61 D6 -- 000CB0
61 D6 36 C4 2E 05 88 61 D2 3E C5 2E E4 2A 01 45 -- 000CC0
02 45 8A 02 5C 8E 26 3C 03 26 F8 8B 24 FE 46 6B -- 000CD0
6B 61 D6 36 C4 2E 01 45 88 61 D2 3E C5 2E E4 2A -- 000CE0
2A 03 45 8A 02 5C 8E 26 3C 03 26 F8 8B 24 FE 46 -- 000CF0
05 C7 61 DA 3E C5 2E 02 45 88 61 D2 3E C5 2E E4 -- 000D00
61 E2 3E C5 2E 00 01 05 C7 61 DE 3E C5 2E 00 01 -- 000D10
61 E6 3E C5 2E 05 8B 61 EA 3E C5 2E 00 00 05 C7 -- 000D20
05 89 61 EE 3E C5 2E 05 8B 61 F2 3E C5 2E 05 89 -- 000D30
05 C7 61 FA 3E C5 2E 00 00 05 C7 61 F6 3E C5 2E -- 000D40
C5 2E EE D9 9B 00 05 05 C7 61 FE 3E C5 2E 00 01 -- 000D50
D9 9B 62 06 3E C5 2E EE D9 9B 1D D9 9B 62 02 3E -- 000D60
D9 9B 62 0A 3E C5 2E 05 D9 9B 62 0E 3E C5 2E 1D -- 000D70
D9 9B 62 12 3E C5 2E 05 D9 9B 62 16 3E C5 2E 1D -- 000D80
20 36 FF 2E 57 56 00 00 05 C7 62 1A 3E C5 2E 1D -- 000D90
5F 00 8C 00 02 9A 20 6A 00 6A 62 1E 36 FF 2E 62 -- 000DA0
2E 05 89 62 22 3E C5 2E 05 8B 62 1A 3E C5 2E 5E -- 000DB0
00 64 24 00 9A 01 6A 62 26 36 FF 2E 62 28 36 FF -- 000DC0
3E C5 2E 0B 74 02 3D 80 62 2A 3E C5 2E 06 C4 83 -- 000DD0
02 05 C7 62 2E 3E C5 2E 09 EB 00 06 05 C7 62 2E -- 000DE0
00 06 3D 05 8B 62 2E 3E C5 2E 00 14 05 85 9A 00 -- 000DF0
14 06 40 9A 00 05 C6 62 32 3E C5 2E 35 75 01 FE -- 000E00
62 38 36 FF 2E 00 14 07 95 9A 00 14 07 4D 9A 00 -- 000E10
D0 9A 01 54 68 04 6A 20 6A 22 6A 62 36 36 FF 2E -- 000E20
05 C6 62 32 3E C5 2E 00 C1 E9 0C C4 83 00 64 40 -- 000E30
40 36 FF 2E 57 56 00 00 05 C7 62 3A 3E C5 2E 0F -- 000E40
9A 35 FF 62 42 3E C5 2E 00 6A 62 3E 36 FF 2E 62 -- 000E50
56 00 00 05 C7 62 46 3E C5 2E 5E 5F 00 8C 00 02 -- 000E60
3E C5 2E 00 6A 62 4A 36 FF 2E 62 4C 36 FF 2E 57 -- 000E70

62 4E 3E C5 2E 5E 5F 00 8C 00 02 9A 35 FF 62 42 -- 000E80
3E C5 2E 00 01 05 C7 62 52 3E C5 2E 00 00 05 C7 -- 000E90
2E 00 01 05 C7 62 5A 3E C5 2E 00 00 05 C7 62 56 -- 000EA0
01 05 C7 62 62 3E C5 2E 00 01 05 C7 62 5E 3E C5 -- 000EB0
```

14

```
62 66 3E C5 2E 02 C4 83 00 64 4E 56 9A 0C 6A 00 -- 000EC0
2E 02 55 8B 05 8B 62 66 3E C5 2E 02 55 89 05 89 -- 000ED0
3D C5 62 66 3E C5 2E 02 55 89 05 89 62 6A 3E C5 -- 000EE0
70 36 FF 2E 57 56 00 00 0A 45 C7 00 00 08 45 C7 -- 000EF0
5F 00 8C 00 02 9A 20 6A 00 6A 62 6E 36 FF 2E 62 -- 000F00
6A 00 6A 62 72 36 FF 2E 62 74 36 FF 2E 57 56 5E -- 000F10
36 FF 2E 62 38 36 FF 2E 5E 5F 00 8C 00 02 9A 20 -- 000F20
F5 68 03 6A 50 05 8B 05 FF 62 76 3E C5 2E 62 36 -- 000F30
3D 83 62 36 3E C5 2E 0A C4 83 00 64 40 D0 9A 01 -- 000F40
83 00 64 59 DC 9A 35 FF 62 36 3E C5 2E 0F 74 00 -- 000F50
05 89 62 7A 3E C5 2E 05 8B 62 76 3E C5 2E 02 C4 -- 000F60
FF 62 7E 3E C5 2E 62 36 36 FF 2E 62 38 36 FF 2E -- 000F70
C5 2E 0A C4 83 00 64 40 D0 9A 02 02 68 03 6A 35 -- 000F80
9A 35 FF 62 36 3E C5 2E 0F 74 00 3D 83 62 36 3E -- 000F90
36 36 FF 2E 62 38 36 FF 2E 02 C4 83 00 64 59 DC -- 000FA0
01 F8 68 04 6A 62 02 36 FF 2E 62 04 36 FF 2E 62 -- 000FB0
00 3D 83 62 36 3E C5 2E 0C C4 83 00 64 40 D0 9A -- 000FC0
C4 83 00 64 59 DC 9A 35 FF 62 36 3E C5 2E 0F 74 -- 000FD0
62 76 3E C5 2E 62 36 36 FF 2E 62 38 36 FF 2E 02 -- 000FE0
83 00 64 40 D0 9A 01 F5 68 03 6A 50 05 8B 05 FF -- 000FF0
C5 2E 0F 74 00 3D 83 62 36 3E C5 2E 0A C4 01 FE -- 001000
3E C5 2E 02 C4 83 00 64 59 DC 9A 35 FF 62 36 3E -- 001010
62 38 36 FF 2E 05 89 62 82 3E C5 2E 05 8B 62 76 -- 001020
02 68 03 6A 35 FF 62 86 3E C5 2E 62 36 36 FF 2E -- 001030
3D 83 62 36 3E C5 2E 0A C4 83 00 64 40 D0 9A 02 -- 001040
83 00 64 59 DC 9A 35 FF 62 36 3E C5 2E 0F 74 00 -- 001050
36 36 FF 2E 62 38 36 FF 2E 00 14 53 83 9A 02 C4 -- 001060
01 F8 68 04 6A 62 02 36 FF 2E 62 04 36 FF 2E 62 -- 001070
00 3D 83 62 36 3E C5 2E 0C C4 83 00 64 40 D0 9A -- 001080
C4 83 00 64 59 DC 9A 35 FF 62 36 3E C5 2E 0F 74 -- 001090
05 75 00 3D 83 61 B6 3E C5 2E 00 54 A2 55 9A 02 -- 0010A0
2E EC 8B 55 57 56 CB 5E 5F C9 9B 00 14 57 D9 9A -- 0010B0
00 3D 83 61 B6 3E C5 2E 00 02 05 C7 61 A2 3E C5 -- 0010C0
2E 05 D9 9B 62 8E 3E C5 2E 00 14 57 D9 9A 05 75 -- 0010D0
E0 D1 05 8B 62 96 3E C5 2E 1D D9 9B 62 8A 3E C5 -- 0010E0
8E 3E C5 2E 62 0E 36 C4 2E 05 89 62 92 3E C5 2E -- 0010F0
1D D9 9B 62 9A 3E C5 2E 04 D8 26 9B 05 D9 9B 62 -- 001100
48 04 03 26 05 8B 62 96 3E C5 2E 62 A2 36 C4 2E -- 001110
D9 9B 62 AA 3E C5 2E 05 89 62 9E 3E C5 2E E0 D1 -- 001120
05 8B 62 B2 3E C5 2E 1D D9 9B 62 A6 3E C5 2E 05 -- 001130
C5 2E 62 16 36 C4 2E 05 89 62 AE 3E C5 2E E0 D1 -- 001140
9B 62 B6 3E C5 2E 04 D8 26 9B 05 D9 9B 62 AA 3E -- 001150
03 26 05 8B 62 B2 3E C5 2E 62 BE 36 C4 2E 1D D9 -- 001160
62 C2 3E C5 2E 05 89 62 BA 3E C5 2E E0 D1 48 04 -- 001170
C3 17 9A FF FF 05 C7 62 C6 3E C5 2E FF FF 05 C7 -- 001180
FF 6A 12 6A EC 8B 55 57 56 CB 5E 5F C9 9B 00 5C -- 001190
D0 36 FF 2E 62 D2 36 FF 2E 62 D4 36 FF 2E 01 6A -- 0011A0
50 52 0C C4 83 00 5C 93 FD 9A 62 CE 36 FF 2E 62 -- 0011B0
83 00 5C ED 6E 9A 62 CA 36 FF 2E 62 CC 36 FF 2E -- 0011C0
D6 3E C5 2E 0F 74 00 3D 83 62 D6 3E C5 2E 0A C4 -- 0011D0
62 CA 3E C5 2E 02 C4 83 00 44 56 66 9A 35 FF 62 -- 0011E0
2E 02 55 89 05 89 62 DA 3E C5 2E 02 55 8B 05 8B -- 0011F0
62 E0 36 FF 2E 62 36 36 FF 2E 62 38 36 FF 01 FE -- 001200
9A 35 FF 02 75 FF 62 DA 3E C5 2E 62 DE 36 FF 2E -- 001210

74 00 3D 83 62 36 3E C5 2E 0C C4 83 00 54 F6 E3 -- 001220
02 C4 83 00 64 59 DC 9A 35 FF 62 36 3E C5 2E 0F -- 001230
05 89 62 E2 3E C5 2E E4 2A 05 8A 62 E6 3E C5 2E -- 001240
EB 00 00 FE 46 C7 00 00 02 C8 57 56 CB 5E 5F C9 -- 001250
3E C5 2E 00 80 E9 03 7C 04 FE 7E 83 FE 46 FF 03 -- 001260
```

15

```
C1 FE 7E 8B 02 C4 83 00 64 4E 56 9A 35 FF 62 EE -- 001270
55 89 05 89 62 EC 1E 8E 2E 62 EA 3E 03 2E 02 E7 -- 001280
EC 1E 8E 2E 62 EA 3E 03 2E 02 E7 C1 FE 7E 8B 02 -- 001290
00 64 59 DC 9A 11 07 68 0B 75 05 0B 02 45 8B 62 -- 0012A0
62 EA 3E 03 2E 02 E7 C1 FE 7E 8B 57 56 02 C4 83 -- 0012B0
09 E0 C1 FE 46 8B 35 FF 02 75 FF 62 EC 1E 8E 2E -- 0012C0
EE 3E C5 2E 50 52 62 F4 16 8B 2E 62 F2 06 03 2E -- 0012D0
5E 5F C9 FF 74 E9 5E 5F 00 5C FE EC 9A 35 FF 62 -- 0012E0
46 FF 03 EB 00 00 FE 46 C7 00 00 02 C8 57 56 CB -- 0012F0
2E 09 E0 C1 FE 46 8B 57 56 56 7D 04 FE 7E 83 FE -- 001300
E7 C1 FE 7E 8B 50 52 62 F4 16 8B 2E 62 F2 06 03 -- 001310
35 FF 02 75 FF 62 EC 1E 8E 2E 62 EA 3E 03 2E 02 -- 001320
7E 8B 5E 5F 00 5C FE EC 9A 35 FF 62 EE 3E C5 2E -- 001330
75 FF 62 EC 1E 8E 2E 62 EA 3E 03 2E 02 E7 C1 FE -- 001340
5E 5F C9 A1 EB 04 C4 83 00 64 4E E3 9A 35 FF 02 -- 001350
46 FF 03 EB 00 00 FE 46 C7 00 00 04 C8 57 56 CB -- 001360
46 FF 03 EB 00 00 FC 46 C7 2E 7D 04 FE 7E 83 FE -- 001370
FE 7E 8B E6 D1 FC 76 8B E6 7D 01 00 FC 7E 81 FC -- 001380
81 FE 03 62 F4 1E 8E 2E 62 F2 3E 03 2E 09 E7 C1 -- 001390
2E 00 00 06 C8 57 56 CB 5E 5F C9 D9 EB FF FE 25 -- 0013A0
57 56 01 E4 E9 03 75 00 0F 3D 05 8B 62 F6 3E C5 -- 0013B0
2E 62 F4 36 FF 2E 62 FA 36 FF 2E 62 FC 36 FF 2E -- 0013C0
9A 50 02 E0 C1 05 8B 62 EE 3E C5 2E 62 F2 36 FF -- 0013D0
00 02 3D 05 8B 62 FE 3E C5 2E 5E 5F 00 5C FE EC -- 0013E0
03 FC 7E 83 FC 46 FF 03 EB 00 00 FC 46 C7 51 75 -- 0013F0
02 36 03 2E E6 D1 FC 76 8B 01 46 E9 03 7E 01 FE -- 001400
04 23 26 05 8B 62 F6 3E C5 2E 63 04 06 8E 2E 63 -- 001410
2E 62 FA 06 03 2E 09 E0 C1 FC 46 8B 57 56 D9 75 -- 001420
8C 00 02 9A 02 00 68 00 FF 68 50 52 62 FC 16 8B -- 001430
74 00 01 3D 05 8B 62 FE 3E C5 2E B6 EB 5E 5F 00 -- 001440
45 8B 63 02 3E C5 2E 62 F6 36 C4 2E 00 F9 E9 03 -- 001450
FC 46 FF 03 EB 00 00 FC 46 C7 51 74 04 23 26 06 -- 001460
03 2E E6 D1 FC 76 8B 00 D4· E9 03 7C 03 FC 7E 83 -- 001470
26 05 8B 62 F6 3E C5 2E 63 04 06 8E 2E 63 02 36 -- 001480
FA 06 03 2E 09 E0 C1 FC 46 8B 57 56 D9 75 04 23 -- 001490
02 9A 02 00 68 00 FF 68 50 52 62 FC 16 8B 2E 62 -- 0014A0
46 FF 03 EB 00 00 FC 46 C7 B6 EB 5E 5F 00 8C 00 -- 0014B0
02 36 03 2E E6 D1 FC 76 8B 69 7D 03 FC 7E 83 FC -- 0014C0
04 23 26 05 8B 62 F6 3E C5 2E 63 04 06 8E 2E 63 -- 0014D0
2E 62 FA 06 03 2E 09 E0 C1 FC 46 8B 57 56 DC 75 -- 0014E0
00 8C 00 02 9A 02 00 68 00 6A 50 52 62 FC 16 8B -- 0014F0
FF FA 7E 81 FA 46 FF 03 EB 00 00 FA 46 C7 5E 5F -- 001500
03 2E 09 E7 C1 FC 7E 8B E6 D1 FA 76 8B AB 7F 00 -- 001510
D9 EB 00 01 0D 81 FE 03 62 FC 1E 8E 2E 62 FA 3E -- 001520
50 06 00 05 62 FA 06 8B 2E 62 FC 36 FF 2E 57 56 -- 001530
36 FF 2E 5E 5F 00 8C 00 02 9A 02 00 68 00 FF 68 -- 001540
FF 02 75 FF 63 0E 3E C5 2E 62 36 36 FF 2E 62 38 -- 001550
C5 2E FE 76 FF 62 FA 36 FF 2E 62 FC 36 FF 2E 35 -- 001560
53 68 09 6A 35 FF 63 06 3E C5 2E 35 FF 63 0A 3E -- 001570
3D 83 62 36 3E C5 2E 16 C4 83 00 64 40 D0 9A 01 -- 001580
83 00 64 59 DC 9A 35 FF 62 36 3E C5 2E 66 74 00 -- 001590
C5 2E 62 36 36 FF 2E 62 38 36 FF 2E 55 EB 02 C4 -- 0015A0
36 FF 2E 62 F4 36 FF 2E 35 FF 02 75 FF 63 0E 3E -- 0015B0
06 3E C5 2E 35 FF 63 0A 3E C5 2E FE 76 FF 62 F2 -- 0015C0
16 C4 83 00 64 40 D0 9A 01 53 68 09 6A 35 FF 63 -- 0015D0
FF 62 36 3E C5 2E 0F 74 00 3D 83 62 36 3E C5 2E -- 0015E0
C8 57 56 CB 5E 5F C9 02 C4 83 00 64 59 DC 9A 35 -- 0015F0
9A 63 12 36 FF 2E 63 14 36 FF 2E 00 00 30 01 FE -- 001600
E4 2A 05 8A 63 1A 3E C5 2E 04 C4 83 00 5C DF 76 -- 001610
```

```
E4 2A 05 8A 63 1E 3E C5 2E 05 88 63 16 3E C5 2E  --  001620
2A 05 8A 63 22 3E C5 2E 01 45 88 63 16 3E C5 2E  --  001630
05 8A 63 26 3E C5 2E 02 45 88 63 16 3E C5 2E E4  --  001640
8B 62 2E 3E C5 2E 03 45 88 63 16 3E C5 2E E4 2A  --  001650
63 2E 36 FF 2E 63 30 36 FF 2E 3B 75 00 02 3D 05  --  001660
41 D7 9A 00 80 68 63 2A 36 FF 2E 63 2C 36 FF 2E  --  001670
2E 63 2E 36 FF 2E 63 30 36 FF 2E 0A C4 83 00 14  --  001680
C4 83 00 14 40 DD 9A 63 2A 36 FF 2E 63 2C 36 FF  --  001690
36 FF 2E 62 4A 36 FF 2E 62 4C 36 FF 2E 57 56 08  --  0016A0
EC 9A 35 FF 62 42 3E C5 2E 63 32 36 FF 2E 63 34  --  0016B0
46 3E C5 2E 05 8B 62 1A 3E C5 2E 5E 5F 00 5C FE  --  0016C0
01 EC E9 03 74 00 3D 83 61 DE 3E C5 2E 05 89 62  --  0016D0
00 64 4E 56 9A 50 02 E0 C1 05 8B 63 3A 3E C5 2E  --  0016E0
5A 54 9A 02 55 89 05 89 63 36 3E C5 2E 02 C4 83  --  0016F0
3E 3E C5 2E FC 46 FF 03 EB 00 00 FC 46 C7 00 14  --  001700
00 00 FA 46 C7 01 48 E9 03 7C 05 3B FC 46 8B 63  --  001710
7D 05 3B FA 46 8B 62 E2 3E C5 2E FA 46 FF 03 EB  --  001720
06 03 2E E4 2A 05 8A FA 7E 03 63 42 3E C5 2E 42  --  001730
36 C4 2E D2 56 89 D0 46 89 63 18 16 8B 2E 63 16  --  001740
7E 03 F8 8B FC 6E F7 05 8B 62 E2 3E C5 2E 63 36  --  001750
88 D0 7E C5 E4 2A 05 8A 02 5C 8E 26 3C 03 26 FA  --  001760
04 C4 83 00 14 0D 71 9A 50 D4 46 8D 16 AF EB 05  --  001770
F6 3E C5 2E 72 75 00 06 3D 05 8B 62 2E 3E C5 2E  --  001780
46 FE 03 EB 00 FF 46 C6 55 74 00 0F 3D 05 8B 62  --  001790
E6 D1 F0 8B E4 2A FF 46 8A 46 73 04 FF 7E 80 FF  --  0017A0
8B 62 F6 3E C5 2E 63 04 06 8E 2E 63 02 36 03 2E  --  0017B0
03 E7 D1 F8 8B E4 2A FF 46 8A D8 75 04 23 26 05  --  0017C0
D1 F8 8B E4 2A FF 46 8A FF 05 C6 D6 5E 8E D4 7E  --  0017D0
D6 76 FF B1 EB 00 01 45 C6 D6 5E 8E D4 7E 03 E7  --  0017E0
C5 2E FF 0B E9 04 C4 83 00 14 0C CF 9A D4 76 FF  --  0017F0
FF 46 C6 FE FE E9 03 75 00 3D 83 63 46 3E 01 FE  --  001800
8A FE EC E9 03 72 04 FF 7E 80 FF 46 FE 03 EB 00  --  001810
06 8E 2E 63 02 36 03 2E E6 D1 F0 8B E4 2A FF 46  --  001820
46 8A D5 75 04 23 26 05 8B 63 46 3E C5 2E 63 04  --  001830
FF 05 C6 D6 5E 8E D4 7E 03 E7 D1 F8 8B E4 2A FF  --  001840
C6 D6 5E 8E D4 7E 03 E7 D1 F8 8B E4 2A FF 46 8A  --  001850
75 00 06 3D 05 8B 62 2E 3E C5 2E AE EB 00 01 45  --  001860
62 36 36 FF 2E 62 38 36 FF 2E 00 14 07 95 9A 62  --  001870
62 B8 36 FF 2E 20 6A 22 6A 35 FF 61 B2 3E C5 2E  --  001880
2E 62 9A 36 FF 2E 62 9C 36 FF 2E 62 B6 36 FF 2E  --  001890
FF 2E 62 8C 36 FF 2E 62 A6 36 FF 2E 62 A8 36 FF  --  0018A0
6A 01 6A 35 FF 02 75 FF 63 4A 3E C5 2E 62 8A 36  --  0018B0
D4 9A 05 EB 24 C4 83 00 64 40 D0 9A 01 47 68 10  --  0018C0
4E E3 9A 35 FF 02 75 FF 63 36 3E C5 2E 00 14 10  --  0018D0
C7 00 00 0A C8 57 56 CB 5E 5F C9 04 C4 83 00 64  --  0018E0
E9 03 7C 04 FE 7E 83 FE 46 FF 03 EB 00 00 FE 46  --  0018F0
C5 FB 46 88 E4 2A 05 8A 0A 46 FF 0A 7E C5 00 85  --  001900
C1 FE 46 8B FA 46 88 E4 2A 05 8A 0A 46 FF 0A 7E  --  001910
89 F6 46 89 62 F4 16 8B 2E 62 F2 06 03 2E 09 E0  --  001920
2A FA 46 8A FC 46 FF 03 EB 00 00 FC 46 C7 F8 56  --  001930
FE 25 81 02 F6 46 83 F6 7E C5 10 76 FC 46 3B E4  --  001940
10 72 FC 46 3B E4 2A FB 46 8A FC 46 FF E6 EB FF  --  001950

FC 46 FF E6 EB 00 01 0D 81 02 F6 46 83 F6 7E C5  --  001960
F6 46 83 F6 7E C5 FF 7C E9 03 7E 00 FF FC 7E 81  --  001970
00 0A C8 57 56 CB 5E 5F C9 E6 EB FF FE 25 81 02  --  001980
C7 00 01 05 C7 63 4E 3E C5 2E 00 01 F6 46 C7 00  --  001990
46 8B 62 1A 3E C5 2E FE 46 FF 03 EB 00 00 FE 46  --  0019A0
FD E9 03 75 00 F6 7E 83 02 06 E9 03 7C 05 3B FE  --  0019B0
62 20 1E 8E 2E 62 1E 3E 03 2E E7 D1 FE 7E 8B 01  --  0019C0
```

17

```
FA 46 89 02 E0 C1 FE 46 8B CF 74 FF FF 3D 05 8B -- 0019D0
7E 8B 62 F6 36 C4 2E 00 00 05 C7 63 52 3E C5 2E -- 0019E0
26 05 8B 62 70 1E 8E 2E 62 6E 3E 03 2E E7 D1 FE -- 0019F0
00 06 3D 05 8B 62 2E 3E C5 2E 0C 75 04 3B 01 FE -- 001A00
6E 3E 03 2E E7 D1 FE 7E 8B 63 46 36 C4 2E 2D 74 -- 001A10
00 C8 E9 03 74 04 3B 26 05 8B 62 70 1E 8E 2E 62 -- 001A20
C7 00 B9 E9 03 74 00 02 3D 05 8B 62 2E 3E C5 2E -- 001A30
E9 03 7C 04 FC 7E 83 FC 46 FF 03 EB 00 00 FC 46 -- 001A40
2E 63 32 3E 03 2E E7 D1 FA 7E 03 FC 7E 8B 00 A6 -- 001A50
7E 8B F8 46 89 00 32 05 E4 2A 05 8A 63 34 1E 8E -- 001A60
63 34 1E 8E 2E 63 32 3E 03 2E E7 D1 FA 7E 03 FC -- 001A70
C5 2E 00 FF F8 46 C7 05 76 F8 46 3B E4 2A 05 8A -- 001A80
8B A7 77 F8 46 3B E4 2A 05 8A FC 7E 03 63 16 3E -- 001A90
34 1E 8E 2E 63 32 3E 03 2E E7 D1 FA 7E 03 FC 7E -- 001AA0
03 FC 7E 8B F8 46 89 FF CE 05 E4 2A 01 45 8A 63 -- 001AB0
45 8A 63 34 1E 8E 2E 63 32 3E 03 2E E7 D1 FA 7E -- 001AC0
3E C5 2E 00 00 F8 46 C7 05 73 F8 46 3B E4 2A 01 -- 001AD0
C5 2E 0A 72 F8 46 3B E4 2A 05 8A FC 7E 03 63 16 -- 001AE0
3D 05 8B 63 52 3E C5 2E FF 4E E9 05 FF 63 52 3E -- 001AF0
00 00 05 C7 63 4E 3E C5 2E FE A1 E9 03 74 00 04 -- 001B00
03 7C 04 FC 7E 83 FC 46 FF 03 EB 00 00 FC 46 C7 -- 001B10
63 32 36 03 2E E6 D1 FA 76 03 FC 76 8B 00 9D E9 -- 001B20
2A 05 8A FC 7E 03 63 16 3E C5 2E 63 34 06 8E 2E -- 001B30
8B E4 2A 05 8A 62 32 3E C5 2E 2F 76 04 3A 26 E4 -- 001B40
8B C6 0B E4 2A 05 8A FC 7E 03 63 16 3E C5 2E F0 -- 001B50
34 1E 8E 2E 63 32 3E 03 2E E7 D1 FA 7E 03 FC 7E -- 001B60
36 03 2E E6 D1 FA 76 03 FC 76 8B A2 EB 05 88 63 -- 001B70
8A FC 7E 03 63 16 3E C5 2E 63 34 06 8E 2E 63 32 -- 001B80
16 3E C5 2E FF 7B E9 03 72 01 44 3A 26 E4 2A 05 -- 001B90
E7 D1 FA 7E 03 FC 7E 8B E4 2A 05 8A FC 7E 03 63 -- 001BA0
FF 57 E9 01 45 88 63 34 1E 8E 2E 63 32 3E 03 2E -- 001BB0
3E C5 2E 00 FD E9 03 75 00 3D 83 63 4E 3E C5 2E -- 001BC0
C5 2E 00 14 53 9E 9A 05 7C 00 10 3D 05 8B 62 1A -- 001BD0
FC 46 C7 00 CB E9 03 7C 00 10 3D 05 8B 62 1A 3E -- 001BE0
00 A6 E9 03 7C 04 FC 7E 83 FC 46 FF 03 EB 00 00 -- 001BF0
3E C5 2E F0 8B E4 2A 05 8A 62 32 3E C5 2E 01 FE -- 001C00
62 1A 3E C5 2E C6 0B E4 2A 05 8A FC 7E 03 63 16 -- 001C10
2E 63 32 3E 03 2E E7 D1 FC 7E 03 02 E7 C1 3D 8B -- 001C20
05 8A FC 7E 03 63 16 3E C5 2E 05 88 63 34 1E 8E -- 001C30
D1 FC 7E 03 02 E7 C1 3D 8B 62 1A 3E C5 2E E4 2A -- 001C40
C5 2E 01 45 88 63 34 1E 8E 2E 63 32 3E 03 2E E7 -- 001C50
8B 62 F6 3E C5 2E 1F 75 00 06 3D 05 8B 62 2E 3E -- 001C60
2E 62 6E 3E 03 2E E7 D1 3D 8B 62 1A 3E C5 2E 05 -- 001C70
05 8B 63 46 3E C5 2E FF 6D E9 05 89 62 70 1E 8E -- 001C80
8E 2E 62 6E 3E 03 2E E7 D1 3D 8B 62 1A 3E C5 2E -- 001C90
2E 05 FF 62 1A 3E C5 2E FF 4E E9 05 89 62 70 1E -- 001CA0
2E 63 58 36 FF 2E 12 EB 00 01 05 C7 62 56 3E C5 -- 001CB0
C1 FE 46 8B 04 C4 83 00 5C 97 1E 9A 63 56 36 FF -- 001CC0
89 0A 7E C5 63 34 16 8B 2E 63 32 06 03 2E 03 E0 -- 001CD0
5F C9 05 89 63 5A 3E C5 2E FE 46 8B 02 55 89 05 -- 001CE0
FF 03 EB 00 00 DC 46 C7 00 00 2C C8 57 56 CB 5E -- 001CF0

3E 03 2E E7 D1 DC 7E 8B 15 7D 04 DC 7E 83 DC 46 -- 001D00
DE 46 C7 E2 EB 00 01 05 C7 63 60 1E 8E 2E 63 5E -- 001D10
3B DE 46 8B 62 1A 3E C5 2E DE 46 FF 03 EB 00 00 -- 001D20
62 1E 3E 03 2E E7 D1 DE 7E 8B 06 A4 E9 03 7C 05 -- 001D30
C1 DE 46 8B D8 74 FF FF 3D 05 8B 62 20 1E 8E 2E -- 001D40
46 C7 00 00 05 C7 63 52 3E C5 2E D8 46 89 02 E0 -- 001D50
76 8B 50 7D 04 DC 7E 83 DC 46 FF 03 EB 00 00 DC -- 001D60
63 34 06 8E 2E 63 32 36 03 2E E6 D1 D8 76 03 DC -- 001D70
```

EP 0 533 348 A2

```
77  04  3A  26  E4  2A  05  8A  DC  7E  03  63  16  3E  C5  2E  --  001D80
8E  2E  63  32  36  03  2E  E6  D1  D8  76  03  DC  76  8B  D4  --  001D90
26  E4  2A  05  8A  DC  7E  03  63  16  3E  C5  2E  63  34  06  --  001DA0
C5  2E  A7  EB  05  FF  63  52  3E  C5  2E  B0  72  01  44  3A  --  001DB0
D4  46  C7  FF  57  E9  03  74  00  04  3D  05  8B  63  52  3E  --  001DC0
04  DC  7E  83  DC  46  FF  03  EB  00  00  DC  46  C7  00  00  --  001DD0
36  03  2E  E6  D1  D8  76  03  DC  76  8B  00  8F  E9  03  7C  --  001DE0
2E  E7  D1  D8  7E  03  DC  7E  8B  63  34  06  8E  2E  63  32  --  001DF0
26  E4  2A  05  8A  63  34  1E  8E  2E  63  32  3E  03  01  FE  --  001E00
75  00  06  3D  05  8B  62  2E  3E  C5  2E  5B  74  01  44  3A  --  001E10
63  04  06  8E  2E  63  02  36  03  2E  E6  D1  DC  76  8B  1B  --  001E20
2E  3E  C5  2E  34  74  04  23  26  05  8B  62  F6  3E  C5  2E  --  001E30
00  3D  83  63  46  3E  C5  2E  93  75  00  02  3D  05  8B  62  --  001E40
04  06  8E  2E  63  02  36  03  2E  E6  D1  DC  76  8B  89  74  --  001E50
FF  6B  E9  03  74  04  23  26  05  8B  63  46  3E  C5  2E  63  --  001E60
01  D4  46  C7  08  75  04  D4  7E  83  FF  65  E9  D4  46  FF  --  001E70
03  EB  00  00  DC  46  C7  00  00  D4  46  C7  03  07  E9  00  --  001E80
03  DC  76  8B  02  EF  E9  03  7C  04  DC  7E  83  DC  46  FF  --  001E90
7E  8B  63  34  06  8E  2E  63  32  36  03  2E  E6  D1  D8  76  --  001EA0
63  34  1E  8E  2E  63  32  3E  03  2E  E7  D1  D8  7E  03  DC  --  001EB0
8B  62  2E  3E  C5  2E  58  74  01  44  3A  26  E4  2A  05  8A  --  001EC0
63  02  36  03  2E  E6  D1  DC  76  8B  1B  75  00  06  3D  05  --  001ED0
74  04  23  26  05  8B  62  F6  3E  C5  2E  63  04  06  8E  2E  --  001EE0
3E  C5  2E  3B  75  00  02  3D  05  8B  62  2E  3E  C5  2E  31  --  001EF0
02  36  03  2E  E6  D1  DC  76  8B  31  74  00  3D  83  63  46  --  001F00
04  23  26  05  8B  63  46  3E  C5  2E  63  04  06  8E  2E  63  --  001F10
60  1E  8E  2E  63  5E  3E  03  2E  E7  D1  DC  7E  8B  16  75  --  001F20
03  E7  C1  DC  7E  8B  57  56  FF  58  E9  00  01  05  C7  63  --  001F30
E0  D1  D8  46  8B  50  52  00  20  2D  C7  03  5A  16  C5  8B  --  001F40
6A  9A  04  6A  50  52  63  34  16  8B  2E  63  32  06  03  2E  --  001F50
3E  03  2E  E7  D1  D8  7E  03  DC  7E  8B  5E  5F  00  5C  FF  --  001F60
46  88  FF  EC  05  E4  2A  05  8A  63  34  1E  8E  2E  63  32  --  001F70
8E  2E  63  32  3E  03  2E  E7  D1  D8  7E  03  DC  7E  8B  D7  --  001F80
03  DC  7E  8B  1A  76  05  3A  E4  2A  D7  46  8A  63  34  1E  --  001F90
45  8A  63  34  1E  8E  2E  63  32  3E  03  2E  E7  D1  D8  7E  --  001FA0
3E  C5  2E  C8  8B  E4  2A  D7  46  8A  D7  46  88  E4  2A  01  --  001FB0
62  32  3E  C5  2E  F0  8B  E4  2A  05  8A  DC  7E  03  63  16  --  001FC0
3E  C5  2E  00  94  E9  03  73  C1  3B  C6  0B  E4  2A  05  8A  --  001FD0
03  DC  7E  8B  D7  46  88  E4  2A  05  8A  DC  7E  03  63  16  --  001FE0
46  8A  63  34  1E  8E  2E  63  32  3E  03  2E  E7  D1  D8  7E  --  001FF0
D8  7E  03  DC  7E  8B  61  74  01  45  3A  E4  2A  D7  01  FE  --  002000
E4  2A  05  8A  63  34  1E  8E  2E  63  32  3E  03  2E  E7  D1  --  002010
16  FD  8B  03  E6  C1  DC  76  8B  CA  8B  E2  D1  DC  56  8B  --  002020
C8  8B  03  E0  C1  DC  46  8B  E0  45  88  F9  03  FE  03  1F  --  002030
D7  46  8A  F9  03  FE  03  1F  16  FD  8B  E6  D1  DC  76  8B  --  002040
2E  63  5E  3E  03  2E  E7  D1  DC  7E  8B  E1  45  88  E4  2A  --  002050
00  01  D4  46  C7  FE  27  E9  00  00  05  C7  63  60  1E  8E  --  002060
63  32  3E  03  2E  E7  D1  D8  7E  03  DC  7E  8B  FE  1F  E9  --  002070
D7  46  88  00  14  05  E4  2A  01  45  8A  63  34  1E  8E  2E  --  002080
1E  8E  2E  63  32  3E  03  2E  E7  D1  D8  7E  03  DC  7E  8B  --  002090

03  DC  7E  8B  19  73  01  45  3A  E4  2A  D7  46  8A  63  34  --  0020A0
05  8A  63  34  1E  8E  2E  63  32  3E  03  2E  E7  D1  D8  7E  --  0020B0
32  3E  C5  2E  C8  8B  E4  2A  D7  46  8A  D7  46  88  E4  2A  --  0020C0
7E  03  63  16  3E  C5  2E  F1  0B  F0  8B  E4  2A  05  8A  62  --  0020D0
32  3E  C5  2E  FD  A6  E9  03  76  C6  3B  E4  2A  05  8A  DC  --  0020E0
8A  DC  7E  03  63  16  3E  C5  2E  F0  8B  E4  2A  05  8A  62  --  0020F0
E7  D1  D8  7E  03  DC  7E  8B  D7  46  88  C6  0B  E4  2A  05  --  002100
3A  E4  2A  D7  46  8A  63  34  1E  8E  2E  63  32  3E  03  2E  --  002110
03  E6  C1  DC  76  8B  C8  8B  E0  D1  DC  46  8B  62  74  05  --  002120
```

19

```
E0 45 88 E4 2A D7 46 8A F9 03 FE 03 1F 16 FD 8B -- 002130
1E 8E 2E 63 32 3E 03 2E E7 D1 D8 7E 03 DC 7E 8B -- 002140
8B CA 8B 03 E2 C1 DC 56 8B E4 2A 01 45 8A 63 34 -- 002150
8B E1 45 88 F9 03 FE 03 1F 16 FD 8B E6 D1 DC 76 -- 002160
05 C7 63 60 1E 8E 2E 63 5E 3E 03 2E E7 D1 DC 7E -- 002170
D4 7E 83 FD 05 E9 00 01 D4 46 C7 FD 0D E9 00 00 -- 002180
DA 46 FF 03 EB 00 00 DA 46 C7 00 90 E9 03 75 00 -- 002190
63 5E 3E 03 2E E7 D1 DA 7E 8B 5C 7D 04 DA 7E 83 -- 0021A0
D1 D8 7E 03 DA 7E 8B 00 01 05 C7 63 60 1E 8E 2E -- 0021B0
8B E4 2A 05 8A 63 34 1E 8E 2E 63 32 3E 03 2E E7 -- 0021C0
7E 03 DA 7E 8B E0 45 88 1F 16 FD 03 E7 D1 DA 7E -- 0021D0
01 45 8A 63 34 1E 8E 2E 63 32 3E 03 2E E7 D1 D8 -- 0021E0
E1 45 88 FE 03 1F 16 FD 8B E6 D1 DA 76 8B E4 2A -- 0021F0
DE 7E 8B 00 00 05 C7 63 5E 3E C5 2E 9B EB 01 FE -- 002200
FF FF 05 C7 62 20 1E 8E 2E 62 1E 3E 03 2E E7 D1 -- 002210
FF 03 EB 00 00 DC 46 C7 01 0B E9 00 14 58 F0 9A -- 002220
E0 D1 DC 46 8B 00 F8 E9 03 7C 04 DC 7E 83 DC 46 -- 002230
F1 03 F7 03 07 16 F5 8B 03 E7 C1 DC 7E 8B C8 8B -- 002240
1E 8E 2E 63 32 3E 03 2E E7 D1 D8 7E 03 DC 7E 8B -- 002250
D1 DC 7E 8B 48 75 E0 44 3A 26 E4 2A 05 8A 63 34 -- 002260
34 75 00 3D 83 63 60 1E 8E 2E 63 5E 3E 03 2E E7 -- 002270
16 FD 8B E6 D1 DC 76 8B C8 8B 03 E0 C1 DC 46 8B -- 002280
DC 7E 8B FF FF 05 E4 2A E1 45 8A F9 03 FE 03 1F -- 002290
88 63 34 1E 8E 2E 63 32 3E 03 2E E7 D1 D8 7E 03 -- 0022A0
D1 DC 7E 8B C8 8B 03 E0 C1 DC 46 8B FF 7B E9 05 -- 0022B0
D1 D8 7E 03 DC 7E 8B F1 03 F7 03 07 16 F5 8B E7 -- 0022C0
E4 2A 01 45 8A 63 34 1E 8E 2E 63 32 3E 03 2E E7 -- 0022D0
03 2E E7 D1 DC 7E 8B FF 46 E9 03 74 E1 44 3A 26 -- 0022E0
FF 2F E9 03 74 00 3D 83 63 60 1E 8E 2E 63 5E 3E -- 0022F0
16 FD 8B 03 E6 C1 DC 76 8B C8 8B E0 D1 DC 46 8B -- 002300
7E 03 DC 7E 8B 40 E4 2A E0 45 8A F9 03 FE 03 1F -- 002310
01 45 88 63 34 1E 8E 2E 63 32 3E 03 2E E7 D1 D8 -- 002320
E9 03 74 00 06 3D 05 8B 62 2E 3E C5 2E FE FC E9 -- 002330
04 DC 7E 83 DC 46 FF 03 EB 00 00 DC 46 C7 F9 E8 -- 002340
2E 63 5E 3E 03 2E E7 D1 DC 7E 8B F9 D5 E9 03 7C -- 002350
8B 03 E7 C1 DC 7E 8B E0 75 00 3D 83 63 60 1E 8E -- 002360
83 00 14 0C CF 9A 50 52 00 20 2D C7 03 5A 16 C5 -- 002370
36 36 FF 2E 62 38 36 FF 2E 00 14 07 95 9A 04 C4 -- 002380
B8 36 FF 2E 20 6A 22 6A 35 FF 61 B2 3E C5 2E 62 -- 002390
62 9A 36 FF 2E 62 9C 36 FF 2E 62 B6 36 FF 2E 62 -- 0023A0
2E 62 8C 36 FF 2E 62 A6 36 FF 2E 62 A8 36 FF 2E -- 0023B0
01 6A 35 FF 02 75 FF 63 4A 3E C5 2E 62 8A 36 FF -- 0023C0
FF 69 E9 24 C4 83 00 64 40 D0 9A 01 47 68 10 6A -- 0023D0
34 36 FF 2E 57 56 00 00 02 C8 57 56 CB 5E 5F C9 -- 0023E0
62 4A 36 FF 2E 62 4C 36 FF 2E 63 32 36 FF 2E 63 -- 0023F0
5E 5F 00 5C FE EC 9A 35 FF 62 42 3E C5 2E 01 FE -- 002400
C5 2E 05 89 62 1A 3E C5 2E 05 8B 62 46 3E C5 2E -- 002410
2E 62 38 36 FF 2E 45 75 00 06 3D 05 8B 62 2E 3E -- 002420
36 FF 2E 62 B8 36 FF 2E 22 6A 20 6A 62 36 36 FF -- 002430

9C 36 FF 2E 62 A6 36 FF 2E 62 A8 36 FF 2E 62 B6 -- 002440
62 8A 36 FF 2E 62 8C 36 FF 2E 62 9A 36 FF 2E 62 -- 002450
2E 4D EB 1C C4 83 00 64 40 D0 9A 01 52 68 0C 6A -- 002460
FF 2E 3E 74 08 45 0B 0A 45 8B 3D C5 62 66 3E C5 -- 002470
36 FF 2E 63 2C 36 FF 2E 63 2E 36 FF 2E 63 30 36 -- 002480
3E C5 2E 0A C4 83 00 14 41 D7 9A 00 80 68 63 2A -- 002490
08 45 C7 3D C5 62 66 3E C5 2E 00 01 05 C7 62 62 -- 0024A0
CB 5E 5F C9 00 14 58 F0 9A 00 00 0A 45 C7 00 00 -- 0024B0
03 74 00 3D 83 62 5A 3E C5 2E 00 00 0A C8 57 56 -- 0024C0
FF 2E 57 56 00 01 05 C7 62 5A 3E C5 2E 01 28 E9 -- 0024D0
```

EP 0 533 348 A2

```
36 FF 2E 62 40 36 FF 2E 63 32 36 FF 2E 63 34 36 -- 0024E0
5E 5F 00 5C FE EC 9A 35 FF 62 42 3E C5 2E 62 3E -- 0024F0
57 56 05 89 62 1A 3E C5 2E 05 8B 62 3A 3E C5 2E -- 002500
2E 62 74 36 FF 2E 62 6E 36 FF 2E 62 70 36 FF 2E -- 002510
3E C5 2E 5E 5F 00 5C FE EC 9A 20 6A 62 72 36 FF -- 002520
3D C5 63 62 3E C5 2E 7F 75 00 02 3D 05 8B 62 2E -- 002530
89 F6 46 89 FC 56 89 FA 46 89 0A 55 8B 08 45 8B -- 002540
08 45 8B FA 7E C5 2B 74 FA 46 0B FC 46 8B F8 56 -- 002550
9A FA 76 FF FC 76 FF F8 56 89 F6 46 89 0A 55 8B -- 002560
FA 46 89 F8 56 8B F6 46 8B 04 C4 83 00 64 4E E3 -- 002570
2E 02 55 8B 05 8B 63 62 3E C5 2E CD EB FC 56 89 -- 002580
3D C5 62 66 3E C5 2E 02 55 89 05 89 62 66 3E C5 -- 002590
C7 62 62 3E C5 2E 00 00 0A 45 C7 00 00 08 45 C7 -- 0025A0
36 FF 2E 62 38 36 FF 2E 00 14 58 F0 9A 00 01 05 -- 0025B0
62 B6 36 FF 2E 62 B8 36 FF 2E 22 6A 20 6A 62 36 -- 0025C0
2E 62 9C 36 FF 2E 62 A6 36 FF 2E 62 A8 36 FF 2E -- 0025D0
0C 6A 62 8A 36 FF 2E 62 8C 36 FF 2E 62 9A 36 FF -- 0025E0
56 CB 5E 5F C9 1C C4 83 00 64 40 D0 9A 01 52 68 -- 0025F0
00 FC 46 C7 00 00 FE 46 C7 00 00 0A C8 57 01 FE -- 002600
3E C5 2E 80 F9 46 C6 80 F8 46 C6 80 F7 46 C6 00 -- 002610
E4 2A 05 8A 63 66 3E C5 2E 0E 75 00 3D 83 61 DA -- 002620
46 88 E4 2A 05 8A 63 6A 3E C5 2E 0C EB F6 46 88 -- 002630
50 F6 46 8D 16 62 36 36 FF 2E 62 38 36 FF 2E F6 -- 002640
00 64 40 D0 9A 01 32 68 06 6A FE 76 FF FC 76 FF -- 002650
3E C5 2E 0F 74 00 3D 83 62 36 3E C5 2E 10 C4 83 -- 002660
2A F6 46 8A 02 C4 83 00 64 59 DC 9A 35 FF 62 36 -- 002670
36 FF 2E 62 38 36 FF 2E 05 88 63 6E 3E C5 2E E4 -- 002680
70 36 FF 2E 63 72 36 FF 2E 63 74 36 FF 2E 62 36 -- 002690
0A 6A 00 6A 02 6A 01 6A 10 6A 63 6E 36 FF 2E 63 -- 0026A0
62 36 3E C5 2E 18 C4 83 00 64 40 D0 9A 01 43 68 -- 0026B0
64 59 DC 9A 35 FF 62 36 3E C5 2E 0F 74 00 3D 83 -- 0026C0
C5 2E 0E 75 00 3D 83 61 DA 3E C5 2E 02 C4 83 00 -- 0026D0
66 3E C5 2E 0C EB F6 46 88 E4 2A 05 8A 63 6A 3E -- 0026E0
36 FF 2E 62 38 36 FF 2E F6 46 88 E4 2A 05 8A 63 -- 0026F0
68 06 6A FE 76 FF FC 76 FF 50 F6 46 8D 16 62 36 -- 002700
83 62 36 3E C5 2E 10 C4 83 00 64 40 D0 9A 01 32 -- 002710
00 64 59 DC 9A 35 FF 62 36 3E C5 2E 0F 74 00 3D -- 002720
2E 05 88 63 6E 3E C5 2E E4 2A F6 46 8A 02 C4 83 -- 002730
FF 2E 63 74 36 FF 2E 62 36 36 FF 2E 62 38 36 FF -- 002740
6A 10 6A 63 6E 36 FF 2E 63 70 36 FF 2E 63 72 36 -- 002750
83 00 64 40 D0 9A 01 43 68 0A 6A 00 6A 00 6A 01 -- 002760
36 3E C5 2E 0F 74 00 3D 83 62 36 3E C5 2E 18 C4 -- 002770
56 CB 5E 5F C9 02 C4 83 00 64 59 DC 9A 35 FF 62 -- 002780
C6 00 00 FC 46 C7 00 00 FE 46 C7 00 00 0A C8 57 -- 002790
00 01 FA 46 C7 80 F9 46 C6 80 F8 46 C6 80 F7 46 -- 0027A0
C5 2E 00 C3 E9 03 7C 04 FA 7E 83 FA 46 FF 03 EB -- 0027B0
FA 7E 03 63 66 3E C5 2E 11 75 00 3D 83 61 DA 3E -- 0027C0
7E 03 63 6A 3E C5 2E 0F EB F6 46 88 E4 2A 05 8A -- 0027D0

36 FF 2E 62 38 36 FF 2E F6 46 88 E4 2A 05 8A FA -- 0027E0
68 06 6A FE 76 FF FC 76 FF 50 F6 46 8D 16 62 36 -- 0027F0
36 3E C5 2E 10 C4 83 00 64 40 D0 9A 01 32 01 FE -- 002800
59 DC 9A 35 FF 62 36 3E C5 2E 0F 74 00 3D 83 62 -- 002810
88 63 6E 3E C5 2E E4 2A F6 46 8A 02 C4 83 00 64 -- 002820
63 74 36 FF 2E 62 36 36 FF 2E 62 38 36 FF 2E 05 -- 002830
6A 63 6E 36 FF 2E 63 70 36 FF 2E 63 72 36 FF 2E -- 002840
64 40 D0 9A 01 43 68 0A 6A 00 6A 02 6A 01 6A 10 -- 002850
43 E9 03 75 00 3D 83 62 36 3E C5 2E 18 C4 83 00 -- 002860
02 C4 83 00 64 59 DC 9A 35 FF 62 36 3E C5 2E FF -- 002870
FA 7E 83 FA 46 FF 03 EB 00 01 FA 46 C7 FF 31 E9 -- 002880
```

21

EP 0 533 348 A2

```
11 75 00 3D 83 61 DA 3E C5 2E 00 C3 E9 03 7C 04 -- 002890
EB F6 46 88 E4 2A 05 8A FA 7E 03 63 6A 3E C5 2E -- 0028A0
F6 46 88 E4 2A 05 8A FA 7E 03 63 66 3E C5 2E 0F -- 0028B0
FF 50 F6 46 8D 16 62 36 36 FF 2E 62 38 36 FF 2E -- 0028C0
83 00 64 40 D0 9A 01 32 68 06 6A FE 76 FF FC 76 -- 0028D0
36 3E C5 2E 0F 74 00 3D 83 62 36 3E C5 2E 10 C4 -- 0028E0
E4 2A F6 46 8A 02 C4 83 00 64 59 DC 9A 35 FF 62 -- 0028F0
36 36 FF 2E 62 38 36 FF 2E 05 88 63 6E 3E C5 2E -- 002900
63 70 36 FF 2E 63 72 36 FF 2E 63 74 36 FF 2E 62 -- 002910
68 0A 6A 00 6A 00 6A 01 6A 10 6A 63 6E 36 FF 2E -- 002920
83 62 36 3E C5 2E 18 C4 83 00 64 40 D0 9A 01 43 -- 002930
DC 9A 35 FF 62 36 3E C5 2E FF 43 E9 03 75 00 3D -- 002940
C8 57 56 CB 5E 5F C9 FF 31 E9 02 C4 83 00 64 59 -- 002950
01 5F E9 03 75 00 3D 83 61 DA 3E C5 2E 00 00 0A -- 002960
46 C7 00 00 FE 46 C7 00 00 05 C7 61 DA 3E C5 2E -- 002970
2E 80 F9 46 C6 80 F8 46 C6 80 F7 46 C6 00 00 FC -- 002980
38 36 FF 2E F6 46 88 00 08 0D 05 8B 61 EA 3E C5 -- 002990
76 FF FC 76 FF 50 F6 46 8D 16 62 36 36 FF 2E 62 -- 0029A0
C5 2E 10 C4 83 00 64 40 D0 9A 01 32 68 06 6A FE -- 0029B0
9A 35 FF 62 36 3E C5 2E 0F 74 00 3D 83 62 36 3E -- 0029C0
6E 3E C5 2E E4 2A F6 46 8A 02 C4 83 00 64 59 DC -- 0029D0
36 FF 2E 62 36 36 FF 2E 62 38 36 FF 2E 05 88 63 -- 0029E0
6E 36 FF 2E 63 70 36 FF 2E 63 72 36 FF 2E 63 74 -- 0029F0
01 43 68 0A 6A 00 6A 02 6A 01 6A 10 6A 63 01 FE -- 002A00
00 3D 83 62 36 3E C5 2E 18 C4 83 00 64 40 D0 9A -- 002A10
C4 83 00 64 59 DC 9A 35 FF 62 36 3E C5 2E 0F 74 -- 002A20
FF 2E F6 46 88 00 08 0D 05 8B 61 F2 3E C5 2E 02 -- 002A30
FC 76 FF 50 F6 46 8D 16 62 36 36 FF 2E 62 38 36 -- 002A40
10 C4 83 00 64 40 D0 9A 01 32 68 06 6A FE 76 FF -- 002A50
FF 62 36 3E C5 2E 0F 74 00 3D 83 62 36 3E C5 2E -- 002A60
C5 2E E4 2A F6 46 8A 02 C4 83 00 64 59 DC 9A 35 -- 002A70
2E 62 36 36 FF 2E 62 38 36 FF 2E 05 88 63 6E 3E -- 002A80
FF 2E 63 70 36 FF 2E 63 72 36 FF 2E 63 74 36 FF -- 002A90
01 43 68 0A 6A 00 6A 00 6A 01 6A 10 6A 63 6E 36 -- 002AA0
00 3D 83 62 36 3E C5 2E 18 C4 83 00 64 40 D0 9A -- 002AB0
C4 83 00 64 59 DC 9A 35 FF 62 36 3E C5 2E 0F 74 -- 002AC0
61 DA 3E C5 2E 00 00 0A C8 57 56 CB 5E 5F C9 02 -- 002AD0
C7 61 DA 3E C5 2E 01 6C E9 03 75 00 01 3D 05 8B -- 002AE0
01 56 E9 03 75 00 3D 83 61 B6 3E C5 2E 00 01 05 -- 002AF0
46 C6 80 F7 46 C6 00 00 FC 46 C7 00 00 FE 46 C7 -- 002B00
00 08 0D 05 8B 61 F2 3E C5 2E 80 F9 46 C6 80 F8 -- 002B10
46 8D 16 62 36 36 FF 2E 62 38 36 FF 2E F6 46 88 -- 002B20
40 D0 9A 01 32 68 06 6A FE 76 FF FC 76 FF 50 F6 -- 002B30
2E 0F 74 00 3D 83 62 36 3E C5 2E 10 C4 83 00 64 -- 002B40
46 8A 02 C4 83 00 64 59 DC 9A 35 FF 62 36 3E C5 -- 002B50
2E 62 38 36 FF 2E 05 88 63 6E 3E C5 2E E4 2A F6 -- 002B60
FF 2E 63 72 36 FF 2E 63 74 36 FF 2E 62 36 36 FF -- 002B70

00 6A 02 6A 01 6A 10 6A 63 6E 36 FF 2E 63 70 36 -- 002B80
3E C5 2E 18 C4 83 00 64 40 D0 9A 01 43 68 0A 6A -- 002B90
DC 9A 35 FF 62 36 3E C5 2E 0F 74 00 3D 83 62 36 -- 002BA0
00 08 0D 05 8B 61 EA 3E C5 2E 02 C4 83 00 64 59 -- 002BB0
46 8D 16 62 36 36 FF 2E 62 38 36 FF 2E F6 46 88 -- 002BC0
40 D0 9A 01 32 68 06 6A FE 76 FF FC 76 FF 50 F6 -- 002BD0
2E 0F 74 00 3D 83 62 36 3E C5 2E 10 C4 83 00 64 -- 002BE0
46 8A 02 C4 83 00 64 59 DC 9A 35 FF 62 36 3E C5 -- 002BF0
38 36 FF 2E 05 88 63 6E 3E C5 2E E4 2A F6 01 FE -- 002C00
63 72 36 FF 2E 63 74 36 FF 2E 62 36 36 FF 2E 62 -- 002C10
00 6A 01 6A 10 6A 63 6E 36 FF 2E 63 70 36 FF 2E -- 002C20
2E 18 C4 83 00 64 40 D0 9A 01 43 68 0A 6A 00 6A -- 002C30
```

22

```
35 FF 62 36 3E C5 2E 0F 74 00 3D 83 62 36 3E C5 -- 002C40
0A C8 57 56 CB 5E 5F C9 02 C4 83 00 64 59 DC 9A -- 002C50
2E 01 95 E9 03 75 00 3D 83 61 DA 3E C5 2E 00 00 -- 002C60
FC 46 C7 00 00 FE 46 C7 00 00 05 C7 61 DA 3E C5 -- 002C70
46 C7 80 F9 46 C6 80 F8 46 C6 80 F7 46 C6 00 00 -- 002C80
A8 E9 03 7C 04 FA 7E 83 FA 46 FF 03 EB 00 00 FA -- 002C90
F6 46 88 E4 2A 05 8A FA 7E 03 63 66 3E C5 2E 00 -- 002CA0
FF 50 F6 46 8D 16 62 36 36 FF 2E 62 38 36 FF 2E -- 002CB0
83 00 64 40 D0 9A 01 32 68 06 6A FE 76 FF FC 76 -- 002CC0
36 3E C5 2E 0F 74 00 3D 83 62 36 3E C5 2E 10 C4 -- 002CD0
E4 2A F6 46 8A 02 C4 83 00 64 59 DC 9A 35 FF 62 -- 002CE0
36 36 FF 2E 62 38 36 FF 2E 05 88 63 6E 3E C5 2E -- 002CF0
63 70 36 FF 2E 63 72 36 FF 2E 63 74 36 FF 2E 62 -- 002D00
68 0A 6A 00 6A 02 6A 01 6A 10 6A 63 6E 36 FF 2E -- 002D10
83 62 36 3E C5 2E 18 C4 83 00 64 40 D0 9A 01 43 -- 002D20
DC 9A 35 FF 62 36 3E C5 2E FF 5E E9 03 75 00 3D -- 002D30
03 EB 00 00 FA 46 C7 FF 4C E9 02 C4 83 00 64 59 -- 002D40
6A 3E C5 2E 00 A8 E9 03 7C 04 FA 7E 83 FA 46 FF -- 002D50
62 38 36 FF 2E F6 46 88 E4 2A 05 8A FA 7E 03 63 -- 002D60
FE 76 FF FC 76 FF 50 F6 46 8D 16 62 36 36 FF 2E -- 002D70
3E C5 2E 10 C4 83 00 64 40 D0 9A 01 32 68 06 6A -- 002D80
DC 9A 35 FF 62 36 3E C5 2E 0F 74 00 3D 83 62 36 -- 002D90
63 6E 3E C5 2E E4 2A F6 46 8A 02 C4 83 00 64 59 -- 002DA0
74 36 FF 2E 62 36 36 FF 2E 62 38 36 FF 2E 05 88 -- 002DB0
63 6E 36 FF 2E 63 70 36 FF 2E 63 72 36 FF 2E 63 -- 002DC0
40 D0 9A 01 43 68 0A 6A 00 6A 00 6A 01 6A 10 6A -- 002DD0
E9 03 75 00 3D 83 62 36 3E C5 2E 18 C4 83 00 64 -- 002DE0
C4 83 00 64 59 DC 9A 35 FF 62 36 3E C5 2E FF 5E -- 002DF0
00 00 0A C8 57 56 CB 5E 5F C9 FF 4C E9 02 01 FE -- 002E00
2E 01 95 E9 03 75 00 01 3D 05 8B 61 DA 3E C5 2E -- 002E10
FC 46 C7 00 00 FE 46 C7 00 01 05 C7 61 DA 3E C5 -- 002E20
46 C7 80 F9 46 C6 80 F8 46 C6 80 F7 46 C6 00 00 -- 002E30
A8 E9 03 7C 04 FA 7E 83 FA 46 FF 03 EB 00 00 FA -- 002E40
F6 46 88 E4 2A 05 8A FA 7E 03 63 6A 3E C5 2E 00 -- 002E50
FF 50 F6 46 8D 16 62 36 36 FF 2E 62 38 36 FF 2E -- 002E60
83 00 64 40 D0 9A 01 32 68 06 6A FE 76 FF FC 76 -- 002E70
36 3E C5 2E 0F 74 00 3D 83 62 36 3E C5 2E 10 C4 -- 002E80
E4 2A F6 46 8A 02 C4 83 00 64 59 DC 9A 35 FF 62 -- 002E90
36 36 FF 2E 62 38 36 FF 2E 05 88 63 6E 3E C5 2E -- 002EA0
63 70 36 FF 2E 63 72 36 FF 2E 63 74 36 FF 2E 62 -- 002EB0
68 0A 6A 00 6A 02 6A 01 6A 10 6A 63 6E 36 FF 2E -- 002EC0
83 62 36 3E C5 2E 18 C4 83 00 64 40 D0 9A 01 43 -- 002ED0
DC 9A 35 FF 62 36 3E C5 2E FF 5E E9 03 75 00 3D -- 002EE0
03 EB 00 00 FA 46 C7 FF 4C E9 02 C4 83 00 64 59 -- 002EF0
66 3E C5 2E 00 A8 E9 03 7C 04 FA 7E 83 FA 46 FF -- 002F00
62 38 36 FF 2E F6 46 88 E4 2A 05 8A FA 7E 03 63 -- 002F10

FE 76 FF FC 76 FF 50 F6 46 8D 16 62 36 36 FF 2E -- 002F20
3E C5 2E 10 C4 83 00 64 40 D0 9A 01 32 68 06 6A -- 002F30
DC 9A 35 FF 62 36 3E C5 2E 0F 74 00 3D 83 62 36 -- 002F40
63 6E 3E C5 2E E4 2A F6 46 8A 02 C4 83 00 64 59 -- 002F50
74 36 FF 2E 62 36 36 FF 2E 62 38 36 FF 2E 05 88 -- 002F60
63 6E 36 FF 2E 63 70 36 FF 2E 63 72 36 FF 2E 63 -- 002F70
40 D0 9A 01 43 68 0A 6A 00 6A 00 6A 01 6A 10 6A -- 002F80
E9 03 75 00 3D 83 62 36 3E C5 2E 18 C4 83 00 64 -- 002F90
C4 83 00 64 59 DC 9A 35 FF 62 36 3E C5 2E FF 5E -- 002FA0
C5 2E 00 00 0A C8 57 56 CB 5E 5F C9 FF 4C E9 02 -- 002FB0
61 DE 3E C5 2E 06 86 E9 03 75 00 3D 83 61 DE 3E -- 002FC0
3E C5 2E 00 01 05 C7 61 B2 3E C5 2E 00 00 05 C7 -- 002FD0
75 00 3D 83 61 B6 3E C5 2E 1A 74 00 3D 83 61 B6 -- 002FE0
```

23

```
28 E9 03 74 00 3D 83 61 DA 3E C5 2E 03 35 E9 03 -- 002FF0
F9 46 C6 00 00 FC 46 C7 00 00 FE 46 C7 03 01 FE -- 003000
03 EB 00 00 F6 46 C7 80 FB 46 C6 80 FA 46 C6 80 -- 003010
76 3E C5 2E 00 A8 E9 03 7C 02 F6 7E 83 F6 46 FF -- 003020
62 38 36 FF 2E F8 46 88 E4 2A 05 8A F6 7E 03 63 -- 003030
FE 76 FF FC 76 FF 50 F8 46 8D 16 62 36 36 FF 2E -- 003040
3E C5 2E 10 C4 83 00 64 40 D0 9A 01 32 68 06 6A -- 003050
DC 9A 35 FF 62 36 3E C5 2E 0F 74 00 3D 83 62 36 -- 003060
63 6E 3E C5 2E E4 2A F8 46 8A 02 C4 83 00 64 59 -- 003070
74 36 FF 2E 62 36 36 FF 2E 62 38 36 FF 2E 05 88 -- 003080
63 6E 36 FF 2E 63 70 36 FF 2E 63 72 36 FF 2E 63 -- 003090
40 D0 9A 01 43 68 0A 6A 00 6A 00 6A 01 6A 10 6A -- 0030A0
E9 03 75 00 3D 83 62 36 3E C5 2E 18 C4 83 00 64 -- 0030B0
C4 83 00 64 59 DC 9A 35 FF 62 36 3E C5 2E FF 5E -- 0030C0
7E 83 F6 46 FF 03 EB 00 00 F6 46 C7 FF 4C E9 02 -- 0030D0
8A F6 7E 03 63 7A 3E C5 2E 00 A8 E9 03 7C 02 F6 -- 0030E0
62 36 36 FF 2E 62 38 36 FF 2E F8 46 88 E4 2A 05 -- 0030F0
01 32 68 06 6A FE 76 FF FC 76 FF 50 F8 46 8D 16 -- 003100
00 3D 83 62 36 3E C5 2E 10 C4 83 00 64 40 D0 9A -- 003110
C4 83 00 64 59 DC 9A 35 FF 62 36 3E C5 2E 0F 74 -- 003120
36 FF 2E 05 88 63 6E 3E C5 2E E4 2A F8 46 8A 02 -- 003130
72 36 FF 2E 63 74 36 FF 2E 62 36 36 FF 2E 62 38 -- 003140
6A 01 6A 10 6A 63 6E 36 FF 2E 63 70 36 FF 2E 63 -- 003150
18 C4 83 00 64 40 D0 9A 01 43 68 0A 6A 00 6A 00 -- 003160
3E C5 2E FF 5E E9 03 75 00 3D 83 62 36 3E C5 2E -- 003170
2E FF 4C E9 02 C4 83 00 64 59 DC 9A 35 FF 62 36 -- 003180
61 D2 3E C5 2E F9 46 88 E4 2A 05 8A 61 D2 3E C5 -- 003190
02 45 8A 61 D2 3E C5 2E FA 46 88 E4 2A 01 45 8A -- 0031A0
83 F6 46 FF 03 EB 00 02 F6 46 C7 FB 46 88 E4 2A -- 0031B0
F6 7E 03 63 76 3E C5 2E 00 A8 E9 03 7C 04 F6 7E -- 0031C0
36 36 FF 2E 62 38 36 FF 2E F8 46 88 E4 2A 05 8A -- 0031D0
32 68 06 6A FE 76 FF FC 76 FF 50 F8 46 8D 16 62 -- 0031E0
3D 83 62 36 3E C5 2E 10 C4 83 00 64 40 D0 9A 01 -- 0031F0
64 59 DC 9A 35 FF 62 36 3E C5 2E 0F 74 00 01 FE -- 003200
05 88 63 6E 3E C5 2E E4 2A F8 46 8A 02 C4 83 00 -- 003210
2E 63 74 36 FF 2E 62 36 36 FF 2E 62 38 36 FF 2E -- 003220
10 6A 63 6E 36 FF 2E 63 70 36 FF 2E 63 72 36 FF -- 003230
00 64 40 D0 9A 01 43 68 0A 6A 00 6A 02 6A 01 6A -- 003240
FF 5E E9 03 75 00 3D 83 62 36 3E C5 2E 18 C4 83 -- 003250
E9 02 C4 83 00 64 59 DC 9A 35 FF 62 36 3E C5 2E -- 003260
04 F6 7E 83 F6 46 FF 03 EB 00 02 F6 46 C7 FF 4C -- 003270
2A 05 8A F6 7E 03 63 7A 3E C5 2E 03 D0 E9 03 7C -- 003280
8D 16 62 36 36 FF 2E 62 38 36 FF 2E F8 46 88 E4 -- 003290
D0 9A 01 32 68 06 6A FE 76 FF FC 76 FF 50 F8 46 -- 0032A0
0F 74 00 3D 83 62 36 3E C5 2E 10 C4 83 00 64 40 -- 0032B0

8A 02 C4 83 00 64 59 DC 9A 35 FF 62 36 3E C5 2E -- 0032C0
62 38 36 FF 2E 05 88 63 6E 3E C5 2E E4 2A F8 46 -- 0032D0
2E 63 72 36 FF 2E 63 74 36 FF 2E 62 36 36 FF 2E -- 0032E0
6A 00 6A 01 6A 10 6A 63 6E 36 FF 2E 63 70 36 FF -- 0032F0
C5 2E 18 C4 83 00 64 40 D0 9A 01 43 68 0A 6A 00 -- 003300
62 36 3E C5 2E FF 5E E9 03 75 00 3D 83 62 36 3E -- 003310
FE 46 C7 FF 4C E9 02 C4 83 00 64 59 DC 9A 35 FF -- 003320
C6 80 FA 46 C6 80 F9 46 C6 00 00 FC 46 C7 00 00 -- 003330
F6 7E 83 F6 46 FF 03 EB 00 02 F6 46 C7 80 FB 46 -- 003340
05 8A F6 7E 03 63 76 3E C5 2E 00 A8 E9 03 7C 04 -- 003350
16 62 36 36 FF 2E 62 38 36 FF 2E F8 46 88 E4 2A -- 003360
9A 01 32 68 06 6A FE 76 FF FC 76 FF 50 F8 46 8D -- 003370
74 00 3D 83 62 36 3E C5 2E 10 C4 83 00 64 40 D0 -- 003380
02 C4 83 00 64 59 DC 9A 35 FF 62 36 3E C5 2E 0F -- 003390
```

```
38  36  FF  2E  05  88  63  6E  3E  C5  2E  E4  2A  F8  46  8A  --  0033A0
63  72  36  FF  2E  63  74  36  FF  2E  62  36  36  FF  2E  62  --  0033B0
00  6A  01  6A  10  6A  63  6E  36  FF  2E  63  70  36  FF  2E  --  0033C0
2E  18  C4  83  00  64  40  D0  9A  01  43  68  0A  6A  00  6A  --  0033D0
36  3E  C5  2E  FF  5E  E9  03  75  00  3D  83  62  36  3E  C5  --  0033E0
46  C7  FF  4C  E9  02  C4  83  00  64  59  DC  9A  35  FF  62  --  0033F0
03  7C  04  F6  7E  83  F6  46  FF  03  EB  00  02  F6  01  FE  --  003400
88  E4  2A  05  8A  F6  7E  03  63  7A  3E  C5  2E  00  A8  E9  --  003410
F8  46  8D  16  62  36  36  FF  2E  62  38  36  FF  2E  F8  46  --  003420
64  40  D0  9A  01  32  68  06  6A  FE  76  FF  FC  76  FF  50  --  003430
C5  2E  0F  74  00  3D  83  62  36  3E  C5  2E  10  C4  83  00  --  003440
F8  46  8A  02  C4  83  00  64  59  DC  9A  35  FF  62  36  3E  --  003450
FF  2E  62  38  36  FF  2E  05  88  63  6E  3E  C5  2E  E4  2A  --  003460
36  FF  2E  63  72  36  FF  2E  63  74  36  FF  2E  62  36  36  --  003470
6A  00  6A  00  6A  01  6A  10  6A  63  6E  36  FF  2E  63  70  --  003480
36  3E  C5  2E  18  C4  83  00  64  40  D0  9A  01  43  68  0A  --  003490
35  FF  62  36  3E  C5  2E  FF  5E  E9  03  75  00  3D  83  62  --  0034A0
61  D2  3E  C5  2E  FF  4C  E9  02  C4  83  00  64  59  DC  9A  --  0034B0
2A  01  45  8A  61  D2  3E  C5  2E  F9  46  88  E4  2A  05  8A  --  0034C0
46  88  E4  2A  02  45  8A  61  D2  3E  C5  2E  FA  46  88  E4  --  0034D0
7C  02  F6  7E  83  F6  46  FF  03  EB  00  00  F6  46  C7  FB  --  0034E0
E4  2A  05  8A  F6  7E  03  63  76  3E  C5  2E  00  A8  E9  03  --  0034F0
46  8D  16  62  36  36  FF  2E  62  38  36  FF  2E  F8  46  88  --  003500
40  D0  9A  01  32  68  06  6A  FE  76  FF  FC  76  FF  50  F8  --  003510
2E  0F  74  00  3D  83  62  36  3E  C5  2E  10  C4  83  00  64  --  003520
46  8A  02  C4  83  00  64  59  DC  9A  35  FF  62  36  3E  C5  --  003530
2E  62  38  36  FF  2E  05  88  63  6E  3E  C5  2E  E4  2A  F8  --  003540
FF  2E  63  72  36  FF  2E  63  74  36  FF  2E  62  36  36  FF  --  003550
00  6A  02  6A  01  6A  10  6A  63  6E  36  FF  2E  63  70  36  --  003560
3E  C5  2E  18  C4  83  00  64  40  D0  9A  01  43  68  0A  6A  --  003570
FF  62  36  3E  C5  2E  FF  5E  E9  03  75  00  3D  83  62  36  --  003580
00  F6  46  C7  FF  4C  E9  02  C4  83  00  64  59  DC  9A  35  --  003590
2E  00  A8  E9  03  7C  02  F6  7E  83  F6  46  FF  03  EB  00  --  0035A0
FF  2E  F8  46  88  E4  2A  05  8A  F6  7E  03  63  7A  3E  C5  --  0035B0
FC  76  FF  50  F8  46  8D  16  62  36  36  FF  2E  62  38  36  --  0035C0
10  C4  83  00  64  40  D0  9A  01  32  68  06  6A  FE  76  FF  --  0035D0
FF  62  36  3E  C5  2E  0F  74  00  3D  83  62  36  3E  C5  2E  --  0035E0
C5  2E  E4  2A  F8  46  8A  02  C4  83  00  64  59  DC  9A  35  --  0035F0
36  36  FF  2E  62  38  36  FF  2E  05  88  63  6E  3E  01  FE  --  003600
63  70  36  FF  2E  63  72  36  FF  2E  63  74  36  FF  2E  62  --  003610
68  0A  6A  00  6A  00  6A  01  6A  10  6A  63  6E  36  FF  2E  --  003620
83  62  36  3E  C5  2E  18  C4  83  00  64  40  D0  9A  01  43  --  003630
DC  9A  35  FF  62  36  3E  C5  2E  FF  5E  E9  03  75  00  3D  --  003640
C8  57  56  CB  5E  5F  C9  FF  4C  E9  02  C4  83  00  64  59  --  003650

E9  03  75  00  01  3D  05  8B  61  DE  3E  C5  2E  00  00  0A  --  003660
61  B2  3E  C5  2E  00  01  05  C7  61  DE  3E  C5  2E  06  9A  --  003670
C5  2E  1A  74  00  3D  83  61  B6  3E  C5  2E  00  00  05  C7  --  003680
61  DA  3E  C5  2E  03  3F  E9  03  75  00  3D  83  61  B6  3E  --  003690
FC  46  C7  00  00  FE  46  C7  03  32  E9  03  74  00  3D  83  --  0036A0
46  C7  80  FB  46  C6  80  FA  46  C6  80  F9  46  C6  00  00  --  0036B0
A8  E9  03  7C  02  F6  7E  83  F6  46  FF  03  EB  00  00  F6  --  0036C0
F8  46  88  E4  2A  05  8A  F6  7E  03  63  76  3E  C5  2E  00  --  0036D0
FF  50  F8  46  8D  16  62  36  36  FF  2E  62  38  36  FF  2E  --  0036E0
83  00  64  40  D0  9A  01  32  68  06  6A  FE  76  FF  FC  76  --  0036F0
36  3E  C5  2E  0F  74  00  3D  83  62  36  3E  C5  2E  10  C4  --  003700
E4  2A  F8  46  8A  02  C4  83  00  64  59  DC  9A  35  FF  62  --  003710
36  36  FF  2E  62  38  36  FF  2E  05  88  63  6E  3E  C5  2E  --  003720
63  70  36  FF  2E  63  72  36  FF  2E  63  74  36  FF  2E  62  --  003730
68  0A  6A  00  6A  00  6A  01  6A  10  6A  63  6E  36  FF  2E  --  003740
```

25

```
83 62 36 3E C5 2E 18 C4 83 00 64 40 D0 9A 01 43 -- 003750
DC 9A 35 FF 62 36 3E C5 2E FF 5E E9 03 75 00 3D -- 003760
03 EB 00 00 F6 46 C7 FF 4C E9 02 C4 83 00 64 59 -- 003770
7A 3E C5 2E 00 A8 E9 03 7C 02 F6 7E 83 F6 46 FF -- 003780
62 38 36 FF 2E F8 46 88 E4 2A 05 8A F6 7E 03 63 -- 003790
FE 76 FF FC 76 FF 50 F8 46 8D 16 62 36 36 FF 2E -- 0037A0
3E C5 2E 10 C4 83 00 64 40 D0 9A 01 32 68 06 6A -- 0037B0
DC 9A 35 FF 62 36 3E C5 2E 0F 74 00 3D 83 62 36 -- 0037C0
63 6E 3E C5 2E E4 2A F8 46 8A 02 C4 83 00 64 59 -- 0037D0
74 36 FF 2E 62 36 36 FF 2E 62 38 36 FF 2E 05 88 -- 0037E0
63 6E 36 FF 2E 63 70 36 FF 2E 63 72 36 FF 2E 63 -- 0037F0
9A 01 43 68 0A 6A 00 6A 01 6A 10 6A 01 FE -- 003800
75 00 3D 83 62 36 3E C5 2E 18 C4 83 00 64 40 D0 -- 003810
00 64 59 DC 9A 35 FF 62 36 3E C5 2E FF 5E E9 03 -- 003820
F6 46 FF 03 EB 00 02 F6 46 C7 FF 4C E9 02 C4 83 -- 003830
7E 03 63 7A 3E C5 2E 00 A8 E9 03 7C 04 F6 7E 83 -- 003840
36 FF 2E 62 38 36 FF 2E F8 46 88 E4 2A 05 8A F6 -- 003850
68 06 6A FE 76 FF FC 76 FF 50 F8 46 8D 16 62 36 -- 003860
83 62 36 3E C5 2E 10 C4 83 00 64 40 D0 9A 01 32 -- 003870
00 64 59 DC 9A 35 FF 62 36 3E C5 2E 0F 74 00 3D -- 003880
2E 05 88 63 6E 3E C5 2E E4 2A F8 46 8A 02 C4 83 -- 003890
FF 2E 63 74 36 FF 2E 62 36 36 FF 2E 62 38 36 FF -- 0038A0
6A 10 6A 63 6E 36 FF 2E 63 70 36 FF 2E 63 72 36 -- 0038B0
83 00 64 40 D0 9A 01 43 68 0A 6A 00 6A 02 6A 01 -- 0038C0
2E FF 5E E9 03 75 00 3D 83 62 36 3E C5 2E 18 C4 -- 0038D0
4C E9 02 C4 83 00 64 59 DC 9A 35 FF 62 36 3E C5 -- 0038E0
61 D2 3E C5 2E 00 00 FC 46 C7 00 00 FE 46 C7 FF -- 0038F0
2A 01 45 8A 61 D2 3E C5 2E F9 46 88 E4 2A 05 8A -- 003900
46 88 E4 2A 02 45 8A 61 D2 3E C5 2E FA 46 88 E4 -- 003910
7C 04 F6 7E 83 F6 46 FF 03 EB 00 02 F6 46 C7 FB -- 003920
E4 2A 05 8A F6 7E 03 63 76 3E C5 2E 03 DA E9 03 -- 003930
46 8D 16 62 36 36 FF 2E 62 38 36 FF 2E F8 46 88 -- 003940
40 D0 9A 01 32 68 06 6A FE 76 FF FC 76 FF 50 F8 -- 003950
2E 0F 74 00 3D 83 62 36 3E C5 2E 10 C4 83 00 64 -- 003960
46 8A 02 C4 83 00 64 59 DC 9A 35 FF 62 36 3E C5 -- 003970
2E 62 38 36 FF 2E 05 88 63 6E 3E C5 2E E4 2A F8 -- 003980
FF 2E 63 72 36 FF 2E 63 74 36 FF 2E 62 36 36 FF -- 003990
00 6A 00 6A 01 6A 10 6A 63 6E 36 FF 2E 63 70 36 -- 0039A0
3E C5 2E 18 C4 83 00 64 40 D0 9A 01 43 68 0A 6A -- 0039B0
FF 62 36 3E C5 2E FF 5E E9 03 75 00 3D 83 62 36 -- 0039C0
00 FE 46 C7 FF 4C E9 02 C4 83 00 64 59 DC 9A 35 -- 0039D0
46 C6 80 FA 46 C6 80 F9 46 C6 00 00 FC 46 C7 00 -- 0039E0
04 F6 7E 83 F6 46 FF 03 EB 00 02 F6 46 C7 80 FB -- 0039F0

8A F6 7E 03 63 76 3E C5 2E 00 A8 E9 03 7C 01 FE -- 003A00
62 36 36 FF 2E 62 38 36 FF 2E F8 46 88 E4 2A 05 -- 003A10
01 32 68 06 6A FE 76 FF FC 76 FF 50 F8 46 8D 16 -- 003A20
00 3D 83 62 36 3E C5 2E 10 C4 83 00 64 40 D0 9A -- 003A30
C4 83 00 64 59 DC 9A 35 FF 62 36 3E C5 2E 0F 74 -- 003A40
36 FF 2E 05 88 63 6E 3E C5 2E E4 2A F8 46 8A 02 -- 003A50
72 36 FF 2E 63 74 36 FF 2E 62 36 36 FF 2E 62 38 -- 003A60
6A 01 6A 10 6A 63 6E 36 FF 2E 63 70 36 FF 2E 63 -- 003A70
18 C4 83 00 64 40 D0 9A 01 43 68 0A 6A 00 6A 00 -- 003A80
3E C5 2E FF 5E E9 03 75 00 3D 83 62 36 3E C5 2E -- 003A90
C7 FF 4C E9 02 C4 83 00 64 59 DC 9A 35 FF 62 36 -- 003AA0
E9 03 7C 04 F6 7E 83 F6 46 FF 03 EB 00 02 F6 46 -- 003AB0
46 88 E4 2A 05 8A F6 7E 03 63 7A 3E C5 2E 00 A8 -- 003AC0
50 F8 46 8D 16 62 36 36 FF 2E 62 38 36 FF 2E F8 -- 003AD0
00 64 40 D0 9A 01 32 68 06 6A FE 76 FF FC 76 FF -- 003AE0
3E C5 2E 0F 74 00 3D 83 62 36 3E C5 2E 10 C4 83 -- 003AF0
```

26

```
2A F8 46 8A 02 C4 83 00 64 59 DC 9A 35 FF 62 36 -- 003B00
36 FF 2E 62 38 36 FF 2E 05 88 63 6E 3E C5 2E E4 -- 003B10
70 36 FF 2E 63 72 36 FF 2E 63 74 36 FF 2E 62 36 -- 003B20
0A 6A 00 6A 00 6A 01 6A 10 6A 63 6E 36 FF 2E 63 -- 003B30
62 36 3E C5 2E 18 C4 83 00 64 40 D0 9A 01 43 68 -- 003B40
9A 35 FF 62 36 3E C5 2E FF 5E E9 03 75 00 3D 83 -- 003B50
EB 00 00 F6 46 C7 FF 4C E9 02 C4 83 00 64 59 DC -- 003B60
3E C5 2E 00 A8 E9 03 7C 02 F6 7E 83 F6 46 FF 03 -- 003B70
38 36 FF 2E F8 46 88 E4 2A 05 8A F6 7E 03 63 7A -- 003B80
76 FF FC 76 FF 50 F8 46 8D 16 62 36 36 FF 2E 62 -- 003B90
C5 2E 10 C4 83 00 64 40 D0 9A 01 32 68 06 6A FE -- 003BA0
9A 35 FF 62 36 3E C5 2E 0F 74 00 3D 83 62 36 3E -- 003BB0
6E 3E C5 2E E4 2A F8 46 8A 02 C4 83 00 64 59 DC -- 003BC0
36 FF 2E 62 36 36 FF 2E 62 38 36 FF 2E 05 88 63 -- 003BD0
6E 36 FF 2E 63 70 36 FF 2E 63 72 36 FF 2E 63 74 -- 003BE0
D0 9A 01 43 68 0A 6A 00 6A 02 6A 01 6A 10 6A 63 -- 003BF0
00 3D 83 62 36 3E C5 2E 18 C4 83 00 64 40 01 FE -- 003C00
64 59 DC 9A 35 FF 62 36 3E C5 2E FF 5E E9 03 75 -- 003C10
00 FC 46 C7 00 00 FE 46 C7 FF 4C E9 02 C4 83 00 -- 003C20
3E C5 2E F9 46 88 E4 2A 05 8A 61 D2 3E C5 2E 00 -- 003C30
8A 61 D2 3E C5 2E FA 46 88 E4 2A 01 45 8A 61 D2 -- 003C40
46 FF 03 EB 00 00 F6 46 C7 FB 46 88 E4 2A 02 45 -- 003C50
03 63 76 3E C5 2E 00 A8 E9 03 7C 02 F6 7E 83 F6 -- 003C60
FF 2E 62 38 36 FF 2E F8 46 88 E4 2A 05 8A F6 7E -- 003C70
06 6A FE 76 FF FC 76 FF 50 F8 46 8D 16 62 36 36 -- 003C80
62 36 3E C5 2E 10 C4 83 00 64 40 D0 9A 01 32 68 -- 003C90
64 59 DC 9A 35 FF 62 36 3E C5 2E 0F 74 00 3D 83 -- 003CA0
05 88 63 6E 3E C5 2E E4 2A F8 46 8A 02 C4 83 00 -- 003CB0
2E 63 74 36 FF 2E 62 36 36 FF 2E 62 38 36 FF 2E -- 003CC0
10 6A 63 6E 36 FF 2E 63 70 36 FF 2E 63 72 36 FF -- 003CD0
00 64 40 D0 9A 01 43 68 0A 6A 00 6A 00 6A 01 6A -- 003CE0
FF 5E E9 03 75 00 3D 83 62 36 3E C5 2E 18 C4 83 -- 003CF0
E9 02 C4 83 00 64 59 DC 9A 35 FF 62 36 3E C5 2E -- 003D00
E2 3E C5 2E 00 00 0A C8 57 56 CB 5E 5F C9 FF 4C -- 003D10
05 C7 61 E2 3E C5 2E 01 A1 E9 03 75 00 3D 83 61 -- 003D20
80 F9 46 C6 00 00 FC 46 C7 00 00 FE 46 C7 00 00 -- 003D30
FF 03 EB 00 00 F6 46 C7 80 FB 46 C6 80 FA 46 C6 -- 003D40
A8 E9 03 7C 05 3B F6 46 8B 63 7E 3E C5 2E F6 46 -- 003D50
F8 46 88 E4 2A 05 8A F6 7E 03 63 82 3E C5 2E 00 -- 003D60
FF 50 F8 46 8D 16 62 36 36 FF 2E 62 38 36 FF 2E -- 003D70
83 00 64 40 D0 9A 01 32 68 06 6A FE 76 FF FC 76 -- 003D80
36 3E C5 2E 0F 74 00 3D 83 62 36 3E C5 2E 10 C4 -- 003D90

E4 2A F8 46 8A 02 C4 83 00 64 59 DC 9A 35 FF 62 -- 003DA0
36 36 FF 2E 62 38 36 FF 2E 05 88 63 6E 3E C5 2E -- 003DB0
63 70 36 FF 2E 63 72 36 FF 2E 63 74 36 FF 2E 62 -- 003DC0
68 0A 6A 00 6A 02 6A 01 6A 10 6A 63 6E 36 FF 2E -- 003DD0
83 62 36 3E C5 2E 18 C4 83 00 64 40 D0 9A 01 43 -- 003DE0
DC 9A 35 FF 62 36 3E C5 2E FF 58 E9 03 75 00 3D -- 003DF0
00 00 F6 46 C7 FF 46 E9 02 C4 83 00 64 59 01 FE -- 003E00
7C 05 3B F6 46 8B 63 86 3E C5 2E F6 46 FF 03 EB -- 003E10
E4 2A 05 8A F6 7E 03 63 8A 3E C5 2E 00 A8 E9 03 -- 003E20
46 8D 16 62 36 36 FF 2E 62 38 36 FF 2E F8 46 88 -- 003E30
40 D0 9A 01 32 68 06 6A FE 76 FF FC 76 FF 50 F8 -- 003E40
2E 0F 74 00 3D 83 62 36 3E C5 2E 10 C4 83 00 64 -- 003E50
46 8A 02 C4 83 00 64 59 DC 9A 35 FF 62 36 3E C5 -- 003E60
2E 62 38 36 FF 2E 05 88 63 6E 3E C5 2E E4 2A F8 -- 003E70
FF 2E 63 72 36 FF 2E 63 74 36 FF 2E 62 36 36 FF -- 003E80
00 6A 00 6A 01 6A 10 6A 63 6E 36 FF 2E 63 70 36 -- 003E90
3E C5 2E 18 C4 83 00 64 40 D0 9A 01 43 68 0A 6A -- 003EA0
```

```
FF  62  36  3E  C5  2E  FF  58  E9  03  75  00  3D  83  62  36  --  003EB0
CB  5E  5F  C9  FF  46  E9  02  C4  83  00  64  59  DC  9A  35  --  003EC0
00  01  3D  05  8B  61  E2  3E  C5  2E  00  00  0A  C8  57  56  --  003ED0
46  C7  00  01  05  C7  61  E2  3E  C5  2E  01  A1  E9  03  75  --  003EE0
80  FA  46  C6  80  F9  46  C6  00  00  FC  46  C7  00  00  FE  --  003EF0
C5  2E  F6  46  FF  03  EB  00  00  F6  46  C7  80  FB  46  C6  --  003F00
3E  C5  2E  00  A8  E9  03  7C  05  3B  F6  46  8B  63  86  3E  --  003F10
38  36  FF  2E  F8  46  88  E4  2A  05  8A  F6  7E  03  63  8A  --  003F20
76  FF  FC  76  FF  50  F8  46  8D  16  62  36  36  FF  2E  62  --  003F30
C5  2E  10  C4  83  00  64  40  D0  9A  01  32  68  06  6A  FE  --  003F40
9A  35  FF  62  36  3E  C5  2E  0F  74  00  3D  83  62  36  3E  --  003F50
6E  3E  C5  2E  E4  2A  F8  46  8A  02  C4  83  00  64  59  DC  --  003F60
36  FF  2E  62  36  36  FF  2E  62  38  36  FF  2E  05  88  63  --  003F70
6E  36  FF  2E  63  70  36  FF  2E  63  72  36  FF  2E  63  74  --  003F80
D0  9A  01  43  68  0A  6A  00  6A  02  6A  01  6A  10  6A  63  --  003F90
03  75  00  3D  83  62  36  3E  C5  2E  18  C4  83  00  64  40  --  003FA0
83  00  64  59  DC  9A  35  FF  62  36  3E  C5  2E  FF  58  E9  --  003FB0
2E  F6  46  FF  03  EB  00  00  F6  46  C7  FF  46  E9  02  C4  --  003FC0
C5  2E  00  A8  E9  03  7C  05  3B  F6  46  8B  63  7E  3E  C5  --  003FD0
36  FF  2E  F8  46  88  E4  2A  05  8A  F6  7E  03  63  82  3E  --  003FE0
FF  FC  76  FF  50  F8  46  8D  16  62  36  36  FF  2E  62  38  --  003FF0
C4  83  00  64  40  D0  9A  01  32  68  06  6A  FE  76  01  FE  --  004000
62  36  3E  C5  2E  0F  74  00  3D  83  62  36  3E  C5  2E  10  --  004010
2E  E4  2A  F8  46  8A  02  C4  83  00  64  59  DC  9A  35  FF  --  004020
62  36  36  FF  2E  62  38  36  FF  2E  05  88  63  6E  3E  C5  --  004030
2E  63  70  36  FF  2E  63  72  36  FF  2E  63  74  36  FF  2E  --  004040
43  68  0A  6A  00  6A  00  6A  01  6A  10  6A  63  6E  36  FF  --  004050
3D  83  62  36  3E  C5  2E  18  C4  83  00  64  40  D0  9A  01  --  004060
59  DC  9A  35  FF  62  36  3E  C5  2E  FF  58  E9  03  75  00  --  004070
06  C8  57  56  CB  5E  5F  C9  FF  46  E9  02  C4  83  00  64  --  004080
00  9A  05  75  00  01  3D  05  8B  61  FE  3E  C5  2E  00  00  --  004090
83  63  8E  3E  C5  2E  00  01  05  C7  0A  7E  C5  00  00  00  --  0040A0
05  8B  61  E2  3E  C5  2E  00  1C  BC  87  9A  05  74  00  3D  --  0040B0
DA  3E  C5  2E  F6  2B  02  EB  00  01  BE  05  75  00  01  3D  --  0040C0
33  C0  2B  02  EB  00  01  B8  05  75  00  01  3D  05  8B  61  --  0040D0
3E  C5  2E  42  74  00  3D  83  61  B6  3E  C5  2E  4C  74  C6  --  0040E0
C7  00  03  35  81  61  F2  3E  C5  2E  00  03  35  81  61  EA  --  0040F0
46  8B  61  BA  3E  C5  2E  FC  46  FF  03  EB  00  01  FC  46  --  004100
2E  63  92  3E  03  2E  E7  D1  FC  7E  8B  15  7F  05  3B  FC  --  004110
2E  00  44  5E  3A  9A  DC  EB  00  03  35  81  63  94  1E  8E  --  004120
9C  1E  8E  2E  63  9A  3E  03  2E  4F  3D  8B  63  96  3E  C5  --  004130

CA  3E  C5  2E  05  89  61  E6  3E  C5  2E  E4  2A  05  8A  63  --  004140
05  8A  61  D0  1E  8E  2E  61  CE  3E  03  2E  4F  3D  8B  61  --  004150
05  8B  61  E2  3E  C5  2E  05  89  61  EE  3E  C5  2E  E4  2A  --  004160
DE  3E  C5  2E  F6  2B  02  EB  00  01  BE  05  75  00  01  3D  --  004170
33  C0  2B  02  EB  00  01  B8  05  75  00  01  3D  05  8B  61  --  004180
3E  C5  2E  FE  46  89  05  8B  61  E6  3E  C5  2E  22  74  C6  --  004190
C5  2E  FE  46  8B  05  89  61  E6  3E  C5  2E  05  8B  61  EE  --  0041A0
2E  00  00  FA  46  C7  00  14  44  27  9A  05  89  61  EE  3E  --  0041B0
A2  3E  C5  2E  00  00  28  F6  85  C7  3D  C5  63  9E  3E  C5  --  0041C0
63  9E  3E  C5  2E  28  F8  68  1F  75  00  01  3D  05  8B  63  --  0041D0
9A  63  A6  36  FF  2E  63  A8  36  FF  2E  35  FF  02  75  FF  --  0041E0
2E  28  F8  68  00  54  C8  76  9A  0A  C4  83  00  64  3A  84  --  0041F0
6A  0A  6A  04  6A  35  FF  02  75  FF  63  9E  3E  C5  01  FE  --  004200
00  5C  A5  FF  9A  63  AA  36  FF  2E  63  AC  36  FF  2E  04  --  004210
01  3D  28  F6  85  8B  3D  C5  63  9E  3E  C5  2E  10  C4  83  --  004220
9A  00  02  05  C7  0A  7E  C5  00  01  FA  46  C7  0C  75  00  --  004230
3E  C5  2E  01  6C  E9  03  74  00  FA  7E  83  00  14  47  A2  --  004240
61  BA  3E  C5  2E  00  14  37  A2  9A  00  00  05  C7  61  9E  --  004250
```

28

```
63 B4 36 FF 2E 57 56 05 89 63 AE 3E C5 2E 05 8B -- 004260
68 63 92 36 FF 2E 63 94 36 FF 2E 63 B2 36 FF 2E -- 004270
05 C7 61 FE 3E C5 2E 5E 5F 00 5C FF 6A 9A 01 00 -- 004280
63 B6 3E C5 2E 00 01 05 C7 61 B6 3E C5 2E 00 00 -- 004290
2E 12 6A 00 01 05 C7 63 BA 3E C5 2E 00 01 05 C7 -- 0042A0
FF 2E 63 C0 36 FF 2E 63 C2 36 FF 2E 63 C4 36 FF -- 0042B0
36 FF 2E 12 6A 0A C4 83 00 5C ED 6E 9A 63 BE 36 -- 0042C0
C6 36 FF 2E 63 C8 36 FF 2E 63 CA 36 FF 2E 63 CC -- 0042D0
62 D0 36 FF 2E 66 6A 0A C4 83 00 5C ED 6E 9A 63 -- 0042E0
9A 63 CE 36 FF 2E 63 D0 36 FF 2E 62 CE 36 FF 2E -- 0042F0
FF 2E 63 C0 36 FF 2E 12 6A 0A C4 83 00 5C ED 6E -- 004300
ED 6E 9A 63 D2 36 FF 2E 63 D4 36 FF 2E 63 BE 36 -- 004310
63 C0 36 FF 2E 01 6A 01 6A 12 6A 0A C4 83 00 5C -- 004320
9A 62 CE 36 FF 2E 62 D0 36 FF 2E 63 BE 36 FF 2E -- 004330
FF 2E 63 D8 36 FF 2E 50 52 0C C4 83 00 5C 93 FD -- 004340
63 D6 3E C5 2E 0A C4 83 00 5C ED 6E 9A 63 D6 36 -- 004350
36 FF 2E 04 C4 83 00 5C 60 DD 9A 35 FF 02 75 FF -- 004360
9A 04 C4 83 00 5C 94 D5 9A 63 D6 36 FF 2E 63 D8 -- 004370
2E 04 2B 26 00 01 B8 63 DA 36 C4 2E 00 4C 02 61 -- 004380
00 44 5F EB 9A 00 44 60 DD 9A 05 89 63 DA 3E C5 -- 004390
9A 62 CE 36 FF 2E 62 D0 36 FF 2E 00 54 47 78 9A -- 0043A0
05 C7 61 9E 3E C5 2E 20 EB 04 C4 83 00 5C D3 65 -- 0043B0
CE 36 FF 2E 62 D0 36 FF 2E 00 14 37 A2 9A 00 01 -- 0043C0
05 C7 61 AA 3E C5 2E 04 C4 83 00 5C D3 65 9A 62 -- 0043D0
00 FE 46 C7 00 00 02 C8 57 56 CB 5E 5F C9 00 01 -- 0043E0
C5 2E 01 AE E9 03 74 00 3D 83 61 C6 3E C5 2E 00 -- 0043F0
05 8B 61 FE 3E C5 2E 00 00 05 C7 62 56 3E 01 FE -- 004400
C7 61 FE 3E C5 2E 00 00 00 00 9A 05 75 00 01 3D -- 004410
CC 36 FF 2E 00 01 05 C7 61 C6 3E C5 2E 00 00 05 -- 004420
C5 2E 04 C4 83 00 5C 94 D5 9A 62 CA 36 FF 2E 62 -- 004430
9A 00 14 06 DD 9A 0A 75 00 06 3D 05 8B 62 2E 3E -- 004440
05 8B 62 76 3E C5 2E 50 FE 46 8D 16 00 14 07 95 -- 004450
0A C4 83 00 64 40 D0 9A 01 F6 68 03 6A 50 0D FF -- 004460
C4 83 00 64 59 DC 9A FE 76 FF 0B 74 00 FE 7E 83 -- 004470
50 0D FF 05 8B 62 76 3E C5 2E 50 FE 46 8D 16 02 -- 004480
FE 7E 83 0A C4 83 00 64 40 D0 9A 01 F6 68 03 6A -- 004490
C5 2E 02 C4 83 00 64 59 DC 9A FE 76 FF 0B 74 00 -- 0044A0
6A 50 FE 46 8D 16 12 75 00 06 3D 05 8B 62 2E 3E -- 0044B0
14 E7 1A 9A 08 C4 83 00 64 40 D0 9A 01 55 68 02 -- 0044C0
64 40 D0 9A 6F 6A 03 6A 16 6A 50 FE 46 8D 16 00 -- 0044D0

BC 9A 05 75 00 3D 83 61 B6 3E C5 2E 0A C4 83 00 -- 0044E0
3E C5 2E 00 14 56 F3 9A 00 4C 02 61 9A 00 4C 00 -- 0044F0
44 5E 3A 9A 00 44 5E EB 9A 50 74 00 3D 83 61 9E -- 004500
61 B6 3E C5 2E 00 14 56 F3 9A 00 4C 02 61 9A 00 -- 004510
F7 68 03 6A 01 6A 50 FE 46 8D 16 16 75 00 3D 83 -- 004520
63 DA 36 C4 2E 1C EB 0A C4 83 00 64 40 D0 9A 01 -- 004530
60 DD 9A 05 89 63 DA 3E C5 2E 04 2B 26 00 01 B8 -- 004540
FF 02 75 FF 63 DE 3E C5 2E 00 44 5F EB 9A 00 44 -- 004550
75 FF 61 D6 3E C5 2E 04 C4 83 00 64 4E E3 9A 35 -- 004560
63 E2 3E C5 2E 04 C4 83 00 64 4E E3 9A 35 FF 02 -- 004570
36 FF 2E 63 E4 36 FF 2E 50 FE 46 8D 16 16 05 C6 -- 004580
0E C4 83 00 64 40 D0 9A 6E 6A 05 6A 01 6A 63 E2 -- 004590
5F C9 00 54 47 78 9A 00 00 05 C7 63 E6 3E C5 2E -- 0045A0
3E C5 2E 00 00 FE 46 C7 00 00 06 C8 57 56 CB 5E -- 0045B0
00 06 3D 05 8B 62 2E 3E C5 2E 00 00 05 C7 61 AE -- 0045C0
75 00 01 3D 05 8B 61 DE 3E C5 2E 01 46 E9 03 74 -- 0045D0
FA 46 C7 05 EB 00 01 FA 46 C7 00 14 23 88 9A 0C -- 0045E0
46 3E C5 2E FC 46 FF 03 EB 00 00 FC 46 C7 00 00 -- 0045F0
FC 7E 8B 00 89 E9 03 7C 05 3B FC 46 8B 62 01 FE -- 004600
```

```
FF  3D  05  8B  62  20  1E  8E  2E  62  1E  3E  03  2E  E7  D1  --  004610
8B  2E  62  4A  06  03  2E  03  E0  C1  FC  46  8B  D8  74  FF  --  004620
07  95  9A  04  C4  83  00  14  0C  CF  9A  50  52  62  4C  16  --  004630
22  6A  35  FF  61  B2  3E  C5  2E  50  FE  46  8D  16  00  14  --  004640
9C  36  FF  2E  62  B6  36  FF  2E  62  B8  36  FF  2E  20  6A  --  004650
62  A6  36  FF  2E  62  A8  36  FF  2E  62  9A  36  FF  2E  62  --  004660
FF  63  4A  3E  C5  2E  62  8A  36  FF  2E  62  8C  36  FF  2E  --  004670
00  64  40  D0  9A  01  47  68  10  6A  01  6A  35  FF  02  75  --  004680
FC  46  89  05  8B  63  5A  3E  C5  2E  FF  65  E9  24  C4  83  --  004690
63  34  16  8B  2E  63  32  06  03  2E  03  E0  C1  FC  46  8B  --  0046A0
16  00  14  07  95  9A  04  C4  83  00  14  0C  CF  9A  50  52  --  0046B0
2E  20  6A  22  6A  35  FF  61  B2  3E  C5  2E  50  FE  46  8D  --  0046C0
FF  2E  62  9C  36  FF  2E  62  B6  36  FF  2E  62  B8  36  FF  --  0046D0
36  FF  2E  62  A6  36  FF  2E  62  A8  36  FF  2E  62  9A  36  --  0046E0
FF  02  75  FF  63  4A  3E  C5  2E  62  8A  36  FF  2E  62  8C  --  0046F0
24  C4  83  00  64  40  D0  9A  01  47  68  10  6A  01  6A  35  --  004700
3E  C5  2E  0F  EB  00  14  2A  25  9A  16  74  00  FA  7E  83  --  004710
CB  5E  5F  C9  00  14  3A  E8  9A  05  7E  00  3D  83  62  1A  --  004720
C5  2E  00  00  05  C7  62  5A  3E  C5  2E  EC  8B  55  57  56  --  004730
14  3B  16  9A  00  14  43  43  9A  00  01  05  C7  62  5E  3E  --  004740
57  56  CB  5E  5F  C9  00  01  05  C7  62  52  3E  C5  2E  00  --  004750
05  8B  63  46  3E  C5  2E  00  08  FE  46  C7  00  00  8A  C8  --  004760
FF  7C  86  8D  16  57  56  00  14  53  9E  9A  FF  76  86  89  --  004770
5F  00  8C  00  02  9A  35  FF  62  42  3E  C5  2E  00  6A  50  --  004780
61  B2  3E  C5  2E  0A  74  00  3D  83  62  1A  3E  C5  2E  5E  --  004790
62  82  3E  C5  2E  50  FF  78  86  8D  16  1A  75  00  3D  83  --  0047A0
C7  0A  C4  83  00  64  40  D0  9A  01  F7  68  03  6A  35  FF  --  0047B0
FF  7A  86  FF  04  EB  00  00  FC  46  C7  00  00  FF  7A  86  --  0047C0
36  03  2E  E6  D1  FF  7A  B6  8B  66  7D  10  FF  7A  BE  83  --  0047D0
3B  26  05  8B  63  46  3E  C5  2E  62  70  06  8E  2E  62  6E  --  0047E0
8E  2E  62  1E  3E  03  2E  E7  D1  FF  7A  BE  8B  D9  75  04  --  0047F0
46  8B  57  56  C2  74  FF  FF  3D  05  8B  62  20  1E  01  FE  --  004800
50  52  00  84  2D  D2  8C  C5  03  03  E0  C1  FC  46  FF  FC  --  004810
34  16  8B  2E  63  32  06  03  2E  03  E0  C1  FF  7A  86  8B  --  004820
2E  8F  EB  5E  5F  00  5C  FE  EC  9A  FE  76  FF  50  52  63  --  004830
3D  83  62  52  3E  C5  2E  32  75  00  3D  83  61  B2  3E  C5  --  004840
6A  00  6A  00  6A  00  6A  50  FF  78  86  8D  16  28  74  00  --  004850
D0  9A  01  43  68  0A  6A  01  6A  00  6A  00  6A  00  6A  00  --  004860
00  54  C8  1C  9A  00  5C  0A  A5  9A  18  C4  83  00  64  40  --  004870

3E  C5  2E  00  C2  E9  03  75  00  3D  83  62  1A  3E  C5  2E  --  004880
75  00  3D  83  62  52  3E  C5  2E  0A  74  00  3D  83  63  46  --  004890
22  6A  35  FF  61  B2  3E  C5  2E  50  FF  78  86  8D  16  59  --  0048A0
9C  36  FF  2E  62  B6  36  FF  2E  62  B8  36  FF  2E  20  6A  --  0048B0
62  A6  36  FF  2E  62  A8  36  FF  2E  62  9A  36  FF  2E  62  --  0048C0
2E  63  34  36  FF  2E  62  8A  36  FF  2E  62  8C  36  FF  2E  --  0048D0
01  47  68  10  6A  35  FF  62  1A  3E  C5  2E  63  32  36  FF  --  0048E0
4F  74  00  FC  7E  83  55  EB  24  C4  83  00  64  40  D0  9A  --  0048F0
6A  22  6A  35  FF  61  B2  3E  C5  2E  50  FF  78  86  8D  16  --  004900
62  9C  36  FF  2E  62  B6  36  FF  2E  62  B8  36  FF  2E  20  --  004910
2E  62  A6  36  FF  2E  62  A8  36  FF  2E  62  9A  36  FF  2E  --  004920
FF  50  FF  7C  86  8D  16  62  8A  36  FF  2E  62  8C  36  FF  --  004930
2E  24  C4  83  00  64  40  D0  9A  01  47  68  10  6A  FC  76  --  004940
36  FF  2E  50  FF  78  86  8D  16  21  05  C6  63  E2  3E  C5  --  004950
40  D0  9A  6E  6A  05  6A  01  6A  63  E2  36  FF  2E  63  E4  --  004960
2E  0D  74  00  3D  83  62  52  3E  C5  2E  0E  C4  83  00  64  --  004970
FF  76  86  8B  00  D3  E9  03  74  00  3D  83  61  B2  3E  C5  --  004980
2D  EB  00  08  9B  9A  34  EB  00  5C  07  ED  9A  1C  EB  --  004990
3D  48  1F  EB  00  5C  09  F7  9A  26  EB  00  5C  09  49  9A  --  0049A0
4F  3D  48  3D  73  A7  FF  2E  D8  8B  E0  D1  19  77  00  07  --  0049B0
```

```
C8 1C 9A 3D 5D 3D 83 3D 83 3D 83 3D 56 3D 83 3D -- 0049C0
61 DA 3E C5 2E 6F EB 05 8B 61 A2 3E C5 2E 00 54 -- 0049D0
09 EB 00 00 05 C7 61 DA 3E C5 2E 0B 74 00 3D 83 -- 0049E0
5F EB 00 14 57 D9 9A 00 01 05 C7 61 DA 3E C5 2E -- 0049F0
DE 3E C5 2E 0B 74 00 3D 83 61 DE 3E C5 2E 01 FE -- 004A00
00 01 05 C7 61 DE 3E C5 2E 09 EB 00 00 05 C7 61 -- 004A10
74 00 3D 83 61 E2 3E C5 2E 3A EB 00 14 57 F8 9A -- 004A20
E2 3E C5 2E 09 EB 00 00 05 C7 61 E2 3E C5 2E 0B -- 004A30
00 02 3D 48 15 EB 00 14 58 17 9A 00 01 05 C7 61 -- 004A40
DB 3D B6 3D 91 3E 0F A7 FF 2E D8 8B E0 D1 0F 77 -- 004A50
C6 00 E3 46 C6 00 00 54 C8 57 56 CB 5E 5F C9 3D -- 004A60
DB 46 C6 00 01 DC 46 C7 00 01 DE 46 C7 00 E1 46 -- 004A70
E8 D9 9B 00 C5 46 C6 00 C7 46 C6 01 D9 46 C6 00 -- 004A80
62 1A 3E C5 2E 05 8B 62 22 3E C5 2E B4 5E D9 9B -- 004A90
89 FC 46 89 02 55 8B 05 8B 62 6A 3E C5 2E 05 89 -- 004AA0
02 64 E9 03 75 08 45 0B 0A 45 8B FC 7E C5 FE 56 -- 004AB0
EA 36 C4 2E AC 5E DD 9B 05 DD 9B 63 EE 3E C5 2E -- 004AC0
9B AC 76 DC 9B 0C DC 26 9B 05 D9 9B FC 7E C5 63 -- 004AD0
2E AC 5E DD 9B 05 DD 9B 63 F6 3E C5 2E F0 5E D9 -- 004AE0
9B 0C DC 26 9B 04 45 D9 9B FC 7E C5 63 F2 36 C4 -- 004AF0
55 8B 05 8B 63 FA 3E C5 2E EC 5E D9 9B AC 76 DC -- 004B00
63 FA 3E C5 2E 02 6A 00 6A B2 56 89 B0 46 89 02 -- 004B10
B0 46 03 08 C4 83 00 5C EE D0 9A 35 FF 02 75 FF -- 004B20
ED 99 9A F0 46 D9 9B F6 56 89 F4 46 89 B2 56 13 -- 004B30
FA 56 89 F8 46 89 08 C4 83 00 5C EE 2F 9A 00 5C -- 004B40
FA 3E C5 2E D6 56 89 D4 46 89 FA 56 8B F8 46 8B -- 004B50
89 D0 46 89 00 DA 83 00 01 2D 02 55 8B 05 8B 63 -- 004B60
FF D2 76 FF 50 C8 46 8D 16 50 E6 46 8D 16 D2 56 -- 004B70
E4 2A D9 46 88 00 02 B8 D4 76 FF D6 76 FF D0 76 -- 004B80
46 8A 50 B4 46 8D 16 50 E4 2A DB 46 88 C0 2B 50 -- 004B90
3E C5 2E 50 E4 2A E3 46 88 00 01 B8 50 E4 2A E1 -- 004BA0
83 20 C4 83 00 2C 6F 1C 9A 35 FF 02 75 FF 62 DA -- 004BB0
64 28 52 9A E6 76 FF 01 6A 00 6A 0F 74 00 E6 7E -- 004BC0
EE 2F 9A 00 5C ED 99 9A EC 46 D9 9B 06 C4 83 00 -- 004BD0
50 E6 46 8D 16 CE 56 89 CC 46 89 08 C4 83 00 5C -- 004BE0
FF CE 76 FF 50 E4 2A C7 46 8A 50 E4 2A C5 46 8A -- 004BF0
83 00 2C 79 D7 9A C8 76 FF CA 76 FF CC 76 01 FE -- 004C00
9A E6 76 FF 01 6A 00 6A 0F 74 00 E6 7E 83 10 C4 -- 004C10

E6 46 8D 16 00 01 E4 46 C7 06 C4 83 00 64 28 52 -- 004C20
50 E4 46 8D 16 50 B8 46 8D 16 50 C0 46 8D 16 50 -- 004C30
00 2C 96 CF 9A C8 76 FF CA 76 FF 50 BC 46 8D 16 -- 004C40
E6 76 FF 01 6A 00 6A 0F 74 00 E6 7E 83 18 C4 83 -- 004C50
EA 46 C7 00 00 E8 46 C7 06 C4 83 00 64 28 52 9A -- 004C60
EA 76 8B 67 7D 04 EA 7E 83 EA 46 FF 03 EB 00 00 -- 004C70
FE 3E C5 2E 63 04 06 8E 2E 63 02 36 03 2E E6 D1 -- 004C80
E8 46 FF 50 F4 46 8D 16 3F 74 04 23 26 05 8B 63 -- 004C90
08 C4 83 00 5C EE E2 9A 50 52 99 C6 8B E8 76 8B -- 004CA0
8B D1 13 C3 03 D2 2B 05 8B B8 7E C5 CA 8B D8 8B -- 004CB0
63 16 3E C5 2E E4 2A 05 8A BE 5E 8E BC 7E 03 F8 -- 004CC0
C6 EA 7E 03 63 16 3E C5 2E 9D EB 05 88 EA 7E 03 -- 004CD0
8B 08 45 8B FC 7E C5 00 14 0D 71 9A 90 EB FF 05 -- 004CE0
CA 76 FF 50 E6 46 8D 16 FE 56 89 FC 46 89 0A 55 -- 004CF0
75 00 E6 7E 83 08 C4 83 00 2C A0 F7 9A C8 76 FF -- 004D00
00 64 28 52 9A E6 76 FF 01 6A 00 6A FD A0 E9 03 -- 004D10
EC 8B 55 57 56 CB 5E 5F C9 9B FD 8E E9 06 C4 83 -- 004D20
C5 62 66 3E C5 2E 19 75 00 3D 83 62 62 3E C5 2E -- 004D30
55 89 05 89 62 66 3E C5 2E 0A 55 8B 08 45 8B 3D -- 004D40
9B 0A 7E C5 00 00 05 C7 62 62 3E C5 2E 09 EB 02 -- 004D50
9B 0E 7E C5 1D D9 9B 3D C5 62 66 3E C5 2E 05 D9 -- 004D60
```

31

EP 0 533 348 A2

```
9A OC 6A 04 5D D9 9B 3D C5 62 66 3E C5 2E 05 D9 -- 004D70
45 89 3D C5 62 66 3E C5 2E 02 C4 83 00 64 4E 56 -- 004D80
45 C7 08 7D C5 3D C5 62 66 3E C5 2E 0A 55 89 08 -- 004D90
00 3D 83 62 5E 3E C5 2E 00 00 0A 45 C7 00 00 08 -- 004DA0
62 66 3E C5 2E 00 00 05 C7 62 5E 3E C5 2E 6E 74 -- 004DB0
56 02 55 89 05 89 63 62 3E C5 2E 02 55 8B 05 8B -- 004DC0
63 34 36 FF 2E 62 3E 36 FF 2E 62 40 36 FF 2E 57 -- 004DD0
5C FE EC 9A 35 FF 62 42 3E C5 2E 63 32 36 FF 2E -- 004DE0
89 62 3A 3E C5 2E 05 8B 62 1A 3E C5 2E 5E 5F 00 -- 004DF0
2E 62 72 36 FF 2E 62 74 36 FF 2E 57 56 05 01 FE -- 004E00
00 5C FE EC 9A 20 6A 62 6E 36 FF 2E 62 70 36 FF -- 004E10
FE 46 C7 00 00 02 C8 57 56 CB 5E 5F C9 9B 5E 5F -- 004E20
03 6A 35 FF 62 7A 3E C5 2E 50 FE 46 8D 16 00 00 -- 004E30
74 00 FE 7E 83 0A C4 83 00 64 40 D0 9A 01 FA 68 -- 004E40
FE 46 8D 16 02 C4 83 00 64 59 DC 9A FE 76 FF 0B -- 004E50
9A 01 30 68 06 6A 08 6A 01 6A 02 6A 0A 76 FF 50 -- 004E60
FE 76 FF 0B 74 00 FE 7E 83 10 C4 83 00 64 40 D0 -- 004E70
2A 05 8A 63 E2 3E C5 2E 02 C4 83 00 64 59 DC 9A -- 004E80
07 05 C6 63 E2 3E C5 2E 05 88 64 02 3E C5 2E E4 -- 004E90
6A 63 E2 36 FF 2E 63 E4 36 FF 2E 50 FE 46 8D 16 -- 004EA0
FE 7E 83 0E C4 83 00 64 40 D0 9A 6E 6A 05 6A 01 -- 004EB0
8D 16 02 C4 83 00 64 59 DC 9A FE 76 FF 0B 74 00 -- 004EC0
83 00 64 40 D0 9A 01 2F 68 03 6A 08 6A 50 FE 46 -- 004ED0
00 64 59 DC 9A FE 76 FF 0B 74 00 FE 7E 83 0A C4 -- 004EE0
76 FF 10 76 FF 12 76 FF 50 FE 46 8D 16 02 C4 83 -- 004EF0
00 64 40 D0 9A 00 CA 68 07 6A 01 6A 0C 76 FF 0E -- 004F00
64 59 DC 9A FE 76 FF 0B 74 00 FE 7E 83 12 C4 83 -- 004F10
FF 2E 62 04 36 FF 2E 50 FE 46 8D 16 02 C4 83 00 -- 004F20
0C C4 83 00 64 40 D0 9A 01 F8 68 04 6A 62 02 36 -- 004F30
C4 83 00 64 59 DC 9A FE 76 FF 0B 74 00 FE 7E 83 -- 004F40
88 63 E2 3E C5 2E E4 2A 05 8A 64 02 3E C5 2E 02 -- 004F50
63 E2 36 FF 2E 63 E4 36 FF 2E 50 FE 46 8D 16 05 -- 004F60
7E 83 0E C4 83 00 64 40 D0 9A 6E 6A 05 6A 01 6A -- 004F70
C9 02 C4 83 00 64 59 DC 9A FE 76 FF 0B 74 00 FE -- 004F80
8D 16 00 00 FE 46 C7 00 00 02 C8 57 56 CB 5E 5F -- 004F90
9A 01 F7 68 03 6A 35 FF 62 7A 3E C5 2E 50 FE 46 -- 004FA0
FE 76 FF 0B 74 00 FE 7E 83 0A C4 83 00 64 40 D0 -- 004FB0

3E C5 2E 50 FE 46 8D 16 02 C4 83 00 64 59 DC 9A -- 004FC0
C4 83 00 64 40 D0 9A 01 F6 68 03 6A 35 FF 62 7A -- 004FD0
83 00 64 59 DC 9A FE 76 FF 0B 74 00 FE 7E 83 0A -- 004FE0
03 6A 35 FF 62 7A 3E C5 2E 50 FE 46 8D 16 02 C4 -- 004FF0
FE 7E 83 0A C4 83 00 64 40 D0 9A 01 F5 68 01 FE -- 005000
8D 16 02 C4 83 00 64 59 DC 9A FE 76 FF 0B 74 00 -- 005010
9A 02 02 68 03 6A 35 FF 62 7E 3E C5 2E 50 FE 46 -- 005020
FE 76 FF 0B 74 00 FE 7E 83 0A C4 83 00 64 40 D0 -- 005030
36 FF 2E 50 FE 46 8D 16 02 C4 83 00 64 59 DC 9A -- 005040
64 40 D0 9A 01 F8 68 04 6A 62 02 36 FF 2E 62 04 -- 005050
59 DC 9A FE 76 FF 0B 74 00 FE 7E 83 0C C4 83 00 -- 005060
9A 00 00 06 C8 57 56 CB 5E 5F C9 02 C4 83 00 64 -- 005070
2E 02 C4 83 00 64 4E 56 9A 28 F8 68 00 14 53 9E -- 005080
05 8B 61 B6 3E C5 2E 02 55 89 05 89 63 9E 3E C5 -- 005090
63 B6 3E C5 2E 01 38 85 89 3D C5 63 9E 3E C5 2E -- 0050A0
3E C5 2E 01 3A 85 89 3D C5 63 9E 3E C5 2E 05 8B -- 0050B0
2E 01 3C 85 89 3D C5 63 9E 3E C5 2E 05 8B 61 EA -- 0050C0
3E 85 89 3D C5 63 9E 3E C5 2E 05 8B 61 F2 3E C5 -- 0050D0
89 3D C5 63 9E 3E C5 2E 05 8B 61 E6 3E C5 2E 01 -- 0050E0
C5 63 9E 3E C5 2E 05 8B 61 EE 3E C5 2E 01 40 85 -- 0050F0
9E 3E C5 2E 05 8B 62 1A 3E C5 2E 01 42 85 89 3D -- 005100
C5 2E 05 8B 61 DA 3E C5 2E 02 AA 85 89 3D C5 63 -- 005110
```

32

```
05  8B  61  DE  3E  C5  2E  02  AC  85  89  3D  C5  63  9E  3E  --  005120
61  E2  3E  C5  2E  02  AE  85  89  3D  C5  63  9E  3E  C5  2E  --  005130
3E  C5  2E  02  B0  85  89  3D  C5  63  9E  3E  C5  2E  05  8B  --  005140
2E  02  B2  85  89  3D  C5  63  9E  3E  C5  2E  05  8B  62  2E  --  005150
E2  85  89  3D  C5  63  9E  3E  C5  2E  05  8B  61  CA  3E  C5  --  005160
89  3D  C5  63  9E  3E  C5  2E  05  8B  63  96  3E  C5  2E  02  --  005170
C5  63  9E  3E  C5  2E  05  8B  63  E6  3E  C5  2E  02  E0  85  --  005180
3E  C5  2E  05  DD  9B  64  06  3E  C5  2E  28  E4  85  89  3D  --  005190
DD  9B  64  0A  3E  C5  2E  28  E6  9D  DD  9B  3D  C5  63  9E  --  0051A0
3E  C5  2E  28  EE  9D  DD  9B  3D  C5  63  9E  3E  C5  2E  05  --  0051B0
2E  02  B6  85  89  3D  C5  63  9E  3E  C5  2E  05  8B  62  92  --  0051C0
BA  85  89  3D  C5  63  9E  3E  C5  2E  05  8B  62  AE  3E  C5  --  0051D0
89  3D  C5  63  9E  3E  C5  2E  05  8B  62  9E  3E  C5  2E  02  --  0051E0
C5  63  9E  3E  C5  2E  05  8B  62  BA  3E  C5  2E  02  B8  85  --  0051F0
8B  02  75  FF  63  9E  3E  C5  2E  02  BC  85  89  3D  01  FE  --  005200
3E  C5  2E  04  C4  83  00  14  5F  30  9A  50  02  B4  05  05  --  005210
61  AE  3E  C5  2E  0F  74  00  02  B4  BD  83  3D  C5  63  9E  --  005220
9E  3E  C5  2E  C0  2B  02  EB  00  01  B8  05  74  00  3D  83  --  005230
75  FF  63  9E  3E  C5  2E  57  56  02  B4  85  89  3D  C5  63  --  005240
9A  66  6A  62  CE  36  FF  2E  62  D0  36  FF  2E  35  FF  02  --  005250
02  75  FF  63  9E  3E  C5  2E  57  56  5E  5F  00  5C  FE  EC  --  005260
64  0E  36  FF  2E  64  10  36  FF  2E  50  00  66  05  05  8B  --  005270
9E  3E  C5  2E  57  56  5E  5F  00  5C  FE  EC  9A  00  8A  68  --  005280
2E  63  34  36  FF  2E  50  02  2A  05  05  8B  02  75  FF  63  --  005290
00  5C  FE  EC  9A  35  FF  62  42  3E  C5  2E  63  32  36  FF  --  0052A0
F0  05  05  8B  02  75  FF  63  9E  3E  C5  2E  57  56  5E  5F  --  0052B0
EC  9A  12  6A  63  C2  36  FF  2E  63  C4  36  FF  2E  50  00  --  0052C0
8B  02  75  FF  63  9E  3E  C5  2E  57  56  5E  5F  00  5C  FE  --  0052D0
6A  63  CA  36  FF  2E  63  CC  36  FF  2E  50  01  02  05  05  --  0052E0
FF  63  9E  3E  C5  2E  57  56  5E  5F  00  5C  FE  EC  9A  12  --  0052F0
36  FF  2E  63  C0  36  FF  2E  50  01  14  05  05  8B  02  75  --  005300
3E  C5  2E  57  56  5E  5F  00  5C  FE  EC  9A  12  6A  63  BE  --  005310
63  C8  36  FF  2E  50  01  26  05  05  8B  02  75  FF  63  9E  --  005320
57  56  5E  5F  00  5C  FE  EC  9A  12  6A  63  C6  36  FF  2E  --  005330
FF  2E  50  01  44  05  05  8B  02  75  FF  63  9E  3E  C5  2E  --  005340
00  5C  FE  EC  9A  00  E6  68  62  DE  36  FF  2E  62  E0  36  --  005350

BE  05  05  8B  02  75  FF  63  9E  3E  C5  2E  57  56  5E  5F  --  005360
EC  9A  22  6A  61  FA  36  FF  2E  61  FC  36  FF  2E  50  02  --  005370
8B  02  75  FF  63  9E  3E  C5  2E  57  56  5E  5F  00  5C  FE  --  005380
68  63  9A  36  FF  2E  63  9C  36  FF  2E  50  02  E4  05  05  --  005390
63  9E  3E  C5  2E  57  56  5E  5F  00  5C  FE  EC  9A  01  00  --  0053A0
FF  2E  61  D0  36  FF  2E  50  03  E4  05  05  8B  02  75  FF  --  0053B0
2E  57  56  5E  5F  00  5C  FE  EC  9A  01  00  68  61  CE  36  --  0053C0
3E  C5  2E  50  04  E4  05  05  8B  02  75  FF  63  9E  3E  C5  --  0053D0
5F  00  5C  FE  EC  9A  24  00  68  35  FF  02  75  FF  61  D6  --  0053E0
63  9E  3E  C5  2E  EC  8B  55  57  56  CB  5E  5F  C9  9B  5E  --  0053F0
2E  05  89  61  B6  3E  C5  2E  01  38  85  8B  3D  C5  01  FE  --  005400
89  63  B6  3E  C5  2E  01  3A  85  8B  3D  C5  63  9E  3E  C5  --  005410
EA  3E  C5  2E  01  3C  85  8B  3D  C5  63  9E  3E  C5  2E  05  --  005420
C5  2E  01  3E  85  8B  3D  C5  63  9E  3E  C5  2E  05  89  61  --  005430
01  40  85  8B  3D  C5  63  9E  3E  C5  2E  05  89  61  F2  3E  --  005440
85  8B  3D  C5  63  9E  3E  C5  2E  05  89  61  E6  3E  C5  2E  --  005450
3D  C5  63  9E  3E  C5  2E  05  89  61  EE  3E  C5  2E  01  42  --  005460
63  9E  3E  C5  2E  05  89  62  1A  3E  C5  2E  02  AA  85  8B  --  005470
3E  C5  2E  05  89  61  DA  3E  C5  2E  02  AC  85  8B  3D  C5  --  005480
2E  05  89  61  DE  3E  C5  2E  02  AE  85  8B  3D  C5  63  9E  --  005490
89  61  E2  3E  C5  2E  02  B0  85  8B  3D  C5  63  9E  3E  C5  --  0054A0
2E  3E  C5  2E  02  B2  85  8B  3D  C5  63  9E  3E  C5  2E  05  --  0054B0
C5  2E  02  E2  85  8B  3D  C5  63  9E  3E  C5  2E  05  89  62  --  0054C0
```

33

```
02 E0 85 8B 3D C5 63 9E 3E C5 2E 05 89 61 CA 3E -- 0054D0
85 8B 3D C5 63 9E 3E C5 2E 05 89 63 96 3E C5 2E -- 0054E0
3D C5 63 9E 3E C5 2E 05 89 63 E6 3E C5 2E 28 E4 -- 0054F0
3E C5 2E 1D DD 9B 64 06 3E C5 2E 28 E6 85 DD 9B -- 005500
DD 9B 64 0A 3E C5 2E 28 EE 85 DD 9B 3D C5 63 9E -- 005510
3E C5 2E 62 CE 36 FF 2E 62 D0 36 FF 2E 57 56 1D -- 005520
5E 5F 00 5C FE EC 9A 66 6A 35 FF 02 75 FF 63 9E -- 005530
9E 3E C5 2E 64 0E 36 FF 2E 64 10 36 FF 2E 57 56 -- 005540
FE EC 9A 00 8A 68 50 00 66 05 05 8B 02 75 FF 63 -- 005550
63 32 36 FF 2E 63 34 36 FF 2E 57 56 5E 5F 00 5C -- 005560
C5 2E 50 02 2A 05 05 8B 02 75 FF 63 9E 3E C5 2E -- 005570
FF 2E 57 56 5E 5F 00 5C FE EC 9A 35 FF 62 42 3E -- 005580
02 75 FF 63 9E 3E C5 2E 63 C2 36 FF 2E 63 C4 36 -- 005590
56 5E 5F 00 5C FE EC 9A 12 6A 50 00 F0 05 05 8B -- 0055A0
63 9E 3E C5 2E 63 CA 36 FF 2E 63 CC 36 FF 2E 57 -- 0055B0
00 5C FE EC 9A 12 6A 50 01 02 05 05 8B 02 75 FF -- 0055C0
C5 2E 63 BE 36 FF 2E 63 C0 36 FF 2E 57 56 5E 5F -- 0055D0
EC 9A 12 6A 50 01 14 05 05 8B 02 75 FF 63 9E 3E -- 0055E0
C6 36 FF 2E 63 C8 36 FF 2E 57 56 5E 5F 00 5C FE -- 0055F0
01 26 05 05 8B 02 75 FF 63 9E 3E C5 2E 63 01 FE -- 005600
E0 36 FF 2E 57 56 5E 5F 00 5C FE EC 9A 12 6A 50 -- 005610
05 8B 02 75 FF 63 9E 3E C5 2E 62 DE 36 FF 2E 62 -- 005620
57 56 5E 5F 00 5C FE EC 9A 00 E6 68 50 01 44 05 -- 005630
FF 63 9E 3E C5 2E 61 FA 36 FF 2E 61 FC 36 FF 2E -- 005640
5F 00 5C FE EC 9A 22 6A 50 02 BE 05 05 8B 02 75 -- 005650
3E C5 2E 63 9A 36 FF 2E 63 9C 36 FF 2E 57 56 5E -- 005660
EC 9A 01 00 68 50 02 E4 05 05 8B 02 75 FF 63 9E -- 005670
CE 36 FF 2E 61 D0 36 FF 2E 57 56 5E 5F 00 5C FE -- 005680
68 50 03 E4 05 05 8B 02 75 FF 63 9E 3E C5 2E 61 -- 005690
61 D6 3E C5 2E 57 56 5E 5F 00 5C FE EC 9A 01 00 -- 0056A0
05 05 8B 02 75 FF 63 9E 3E C5 2E 35 FF 02 75 FF -- 0056B0
3E C5 2E 5E 5F 00 5C FE EC 9A 24 00 68 50 04 E4 -- 0056C0
9B 04 C4 83 00 64 4E E3 9A 35 FF 02 75 FF 63 9E -- 0056D0
C7 61 A2 3E C5 2E 00 00 0C C8 57 56 CB 5E 5F C9 -- 0056E0
00 FE 46 C7 00 01 05 C7 63 DA 3E C5 2E 00 03 05 -- 0056F0

46 C6 80 FA 46 C6 80 F9 46 C6 00 00 FC 46 C7 00 -- 005700
2E 02 65 E9 03 74 00 3D 83 61 DA 3E C5 2E 80 FB -- 005710
00 F4 46 C7 01 2C E9 03 74 00 3D 83 61 DE 3E C5 -- 005720
00 00 F6 46 C7 30 74 00 3D 83 61 B6 3E C5 2E 00 -- 005730
63 66 3E C5 2E 20 7D 04 F6 7E 83 F6 46 FF 03 EB -- 005740
3E 03 2E F4 46 FF F4 7E 8B E4 2A 05 8A F6 7E 03 -- 005750
00 00 F6 46 C7 D7 EB 05 88 63 84 1E 8E 2E 63 82 -- 005760
47 47 F6 7E 8B 27 7D 02 F6 7E 83 F6 46 FF 03 EB -- 005770
7E 8B E4 2A 05 8A 63 78 1E 8E 2E 63 76 3E 03 2E -- 005780
05 88 63 84 1E 8E 2E 63 82 3E 03 2E F4 46 FF F4 -- 005790
00 F4 46 C7 05 89 63 7E 3E C5 2E F4 46 8B D0 EB -- 0057A0
00 00 F6 46 C7 30 74 00 3D 83 61 B6 3E C5 2E 00 -- 0057B0
63 6A 3E C5 2E 20 7D 04 F6 7E 83 F6 46 FF 03 EB -- 0057C0
3E 03 2E F4 46 FF F4 7E 8B E4 2A 05 8A F6 7E 03 -- 0057D0
00 00 F6 46 C7 D7 EB 05 88 63 8C 1E 8E 2E 63 8A -- 0057E0
63 7A 3E C5 2E 20 7D 04 F6 7E 83 F6 46 FF 03 EB -- 0057F0
2E F4 46 FF F4 7E 8B E4 2A 05 8A F6 7E 03 01 FE -- 005800
F6 46 C7 D7 EB 05 88 63 8C 1E 8E 2E 63 8A 3E 03 -- 005810
3E C5 2E 20 7D 02 F6 7E 83 F6 46 FF 03 EB 00 00 -- 005820
2E F4 46 FF F4 7E 8B E4 2A 05 8A F6 7E 03 63 76 -- 005830
F4 46 8B D7 EB 05 88 63 8C 1E 8E 2E 63 8A 3E 03 -- 005840
2E 00 00 F4 46 C7 03 A2 E9 05 89 63 86 3E C5 2E -- 005850
03 EB 00 00 F6 46 C7 30 74 00 3D 83 61 B6 3E C5 -- 005860
7E 03 63 66 3E C5 2E 20 7D 04 F6 7E 83 F6 46 FF -- 005870
```

34

```
63  82  3E  03  2E  F4  46  FF  F4  7E  8B  E4  2A  05  8A  F6  --  005880
03  EB  00  00  F6  46  C7  D7  EB  05  88  63  84  1E  8E  2E  --  005890
03  2E  47  47  F6  7E  8B  27  7D  02  F6  7E  83  F6  46  FF  --  0058A0
FF  F4  7E  8B  E4  2A  05  8A  63  7C  1E  8E  2E  63  7A  3E  --  0058B0
D0  EB  05  88  63  84  1E  8E  2E  63  82  3E  03  2E  F4  46  --  0058C0
2E  00  00  F4  46  C7  05  89  63  7E  3E  C5  2E  F4  46  8B  --  0058D0
03  EB  00  00  F6  46  C7  30  74  00  3D  83  61  B6  3E  C5  --  0058E0
7E  03  63  6A  3E  C5  2E  20  7D  04  F6  7E  83  F6  46  FF  --  0058F0
63  8A  3E  03  2E  F4  46  FF  F4  7E  8B  E4  2A  05  8A  F6  --  005900
03  EB  00  00  F6  46  C7  D7  EB  05  88  63  8C  1E  8E  2E  --  005910
7E  03  63  76  3E  C5  2E  20  7D  04  F6  7E  83  F6  46  FF  --  005920
63  8A  3E  03  2E  F4  46  FF  F4  7E  8B  E4  2A  05  8A  F6  --  005930
03  EB  00  00  F6  46  C7  D7  EB  05  88  63  8C  1E  8E  2E  --  005940
7E  03  63  7A  3E  C5  2E  20  7D  02  F6  7E  83  F6  46  FF  --  005950
63  8A  3E  03  2E  F4  46  FF  F4  7E  8B  E4  2A  05  8A  F6  --  005960
86  3E  C5  2E  F4  46  8B  D7  EB  05  88  63  8C  1E  8E  2E  --  005970
03  74  00  3D  83  61  DE  3E  C5  2E  02  76  E9  05  89  63  --  005980
00  3D  83  61  B6  3E  C5  2E  00  00  F4  46  C7  01  36  E9  --  005990
04  F6  7E  83  F6  46  FF  03  EB  00  00  F6  46  C7  30  74  --  0059A0
7E  8B  E4  2A  05  8A  F6  7E  03  63  6A  3E  C5  2E  20  7D  --  0059B0
05  88  63  84  1E  8E  2E  63  82  3E  03  2E  F4  46  FF  F4  --  0059C0
02  F6  7E  83  F6  46  FF  03  EB  00  00  F6  46  C7  D7  EB  --  0059D0
7E  8B  E4  2A  05  8A  F6  7E  03  63  76  3E  C5  2E  20  7D  --  0059E0
05  88  63  84  1E  8E  2E  63  82  3E  03  2E  F4  46  FF  F4  --  0059F0
46  C7  05  89  63  7E  3E  C5  2E  F4  46  8B  D7  EB  01  FE  --  005A00
F6  46  C7  30  74  00  3D  83  61  B6  3E  C5  2E  00  00  F4  --  005A10
3E  C5  2E  20  7D  04  F6  7E  83  F6  46  FF  03  EB  00  00  --  005A20
2E  F4  46  FF  F4  7E  8B  E4  2A  05  8A  F6  7E  03  63  66  --  005A30
F6  46  C7  D7  EB  05  88  63  8C  1E  8E  2E  63  8A  3E  03  --  005A40
3E  C5  2E  20  7D  04  F6  7E  83  F6  46  FF  03  EB  00  00  --  005A50
2E  F4  46  FF  F4  7E  8B  E4  2A  05  8A  F6  7E  03  63  7A  --  005A60
3E  C5  2E  D7  EB  05  88  63  8C  1E  8E  2E  63  8A  3E  03  --  005A70
46  FF  03  EB  00  00  F6  46  C7  37  74  00  3D  83  61  B6  --  005A80
76  3E  03  2E  47  47  F6  7E  8B  27  7D  02  F6  7E  83  F6  --  005A90

F4  46  FF  F4  7E  8B  E4  2A  05  8A  63  78  1E  8E  2E  63  --  005AA0
46  8B  D0  EB  05  88  63  8C  1E  8E  2E  63  8A  3E  03  2E  --  005AB0
00  00  F4  46  C7  01  33  E9  05  89  63  86  3E  C5  2E  F4  --  005AC0
EB  00  00  F6  46  C7  30  74  00  3D  83  61  B6  3E  C5  2E  --  005AD0
03  63  6A  3E  C5  2E  20  7D  04  F6  7E  83  F6  46  FF  03  --  005AE0
82  3E  03  2E  F4  46  FF  F4  7E  8B  E4  2A  05  8A  F6  7E  --  005AF0
EB  00  00  F6  46  C7  D7  EB  05  88  63  84  1E  8E  2E  63  --  005B00
03  63  7A  3E  C5  2E  20  7D  02  F6  7E  83  F6  46  FF  03  --  005B10
82  3E  03  2E  F4  46  FF  F4  7E  8B  E4  2A  05  8A  F6  7E  --  005B20
3E  C5  2E  F4  46  8B  D7  EB  05  88  63  84  1E  8E  2E  63  --  005B30
3D  83  61  B6  3E  C5  2E  00  00  F4  46  C7  05  89  63  7E  --  005B40
F6  7E  83  F6  46  FF  03  EB  00  00  F6  46  C7  30  74  00  --  005B50
8B  E4  2A  05  8A  F6  7E  03  63  66  3E  C5  2E  20  7D  04  --  005B60
88  63  8C  1E  8E  2E  63  8A  3E  03  2E  F4  46  FF  F4  7E  --  005B70
F6  7E  83  F6  46  FF  03  EB  00  00  F6  46  C7  D7  EB  05  --  005B80
8B  E4  2A  05  8A  F6  7E  03  63  76  3E  C5  2E  20  7D  04  --  005B90
88  63  8C  1E  8E  2E  63  8A  3E  03  2E  F4  46  FF  F4  7E  --  005BA0
F6  46  C7  37  74  00  3D  83  61  B6  3E  C5  2E  D7  EB  05  --  005BB0
F6  7E  8B  27  7D  02  F6  7E  83  F6  46  FF  03  EB  00  00  --  005BC0
E4  2A  05  8A  63  7C  1E  8E  2E  63  7A  3E  03  2E  47  47  --  005BD0
63  8C  1E  8E  2E  63  8A  3E  03  2E  F4  46  FF  F4  7E  8B  --  005BE0
C5  2E  05  89  63  86  3E  C5  2E  F4  46  8B  D0  EB  05  88  --  005BF0
5F  C9  00  14  30  D8  9A  00  01  05  C7  61  E2  3E  01  FE  --  005C00
00  02  05  C7  61  A2  3E  C5  2E  EC  8B  55  57  56  CB  5E  --  005C10
2E  38  75  00  3D  83  61  DA  3E  C5  2E  00  14  30  D8  9A  --  005C20
```

35

```
3E  C5  2E  00  14  20  2E  9A  00  01  05  C7  61  DA  3E  C5  --  005C30
00  01  05  C7  61  DE  3E  C5  2E  10  75  00  3D  83  61  DE  --  005C40
00  00  05  C7  61  DE  3E  C5  2E  46  EB  00  14  23  88  9A  --  005C50
00  00  05  C7  61  DA  3E  C5  2E  36  EB  00  14  2A  25  9A  --  005C60
2E  10  75  00  3D  83  61  DE  3E  C5  2E  00  14  21  DA  9A  --  005C70
2E  0E  EB  00  14  23  88  9A  00  01  05  C7  61  DE  3E  C5  --  005C80
5E  5F  C9  00  14  2A  25  9A  00  00  05  C7  61  DE  3E  C5  --  005C90
FE  E1  86  C6  00  FE  E0  86  C6  00  01  22  C8  57  56  CB  --  005CA0
04  FE  E4  86  C6  03  FE  E3  86  C6  02  FE  E2  86  C6  01  --  005CB0
C6  07  FE  E7  86  C6  06  FE  E6  86  C6  05  FE  E5  86  C6  --  005CC0
86  C6  0A  FE  EA  86  C6  09  FE  E9  86  C6  08  FE  E8  86  --  005CD0
EE  86  C6  0D  FE  ED  86  C6  0C  FE  EC  86  C6  0B  FE  EB  --  005CE0
46  89  C0  2B  50  FE  46  8D  16  0F  FE  EF  86  C6  0E  FE  --  005CF0
50  F4  46  89  00  01  B8  50  F2  46  89  00  A0  B8  50  F0  --  005D00
00  04  B8  50  F8  46  89  C0  2B  50  F6  46  89  00  3F  B8  --  005D10
9A  01  4F  68  09  6A  50  FC  46  89  C0  2B  50  FA  46  89  --  005D20
2E  14  05  C6  64  12  3E  C5  2E  16  C4  83  00  64  40  D0  --  005D30
02  45  C6  64  12  3E  C5  2E  10  01  45  C6  64  12  3E  C5  --  005D40
C6  64  16  3E  C5  2E  04  03  45  C6  64  12  3E  C5  2E  00  --  005D50
64  1A  3E  C5  2E  08  01  45  C6  64  16  3E  C5  2E  18  05  --  005D60
F2  36  C4  2E  0C  01  45  C6  64  1A  3E  C5  2E  1C  05  C6  --  005D70
3E  C5  2E  04  0B  26  E4  2A  05  8A  64  16  3E  C5  2E  61  --  005D80
45  8A  64  16  3E  C5  2E  61  F2  36  C4  2E  05  88  63  7A  --  005D90
C4  2E  01  45  88  63  7A  3E  C5  2E  04  0B  26  E4  2A  01  --  005DA0
2E  04  0B  26  E4  2A  05  8A  64  16  3E  C5  2E  61  EA  36  --  005DB0
16  3E  C5  2E  61  EA  36  C4  2E  02  45  88  63  7A  3E  C5  --  005DC0
45  88  63  7A  3E  C5  2E  04  0B  26  E4  2A  01  45  8A  64  --  005DD0
26  E4  2A  05  8A  64  1A  3E  C5  2E  61  F2  36  C4  2E  03  --  005DE0
C5  2E  61  F2  36  C4  2E  05  88  63  76  3E  C5  2E  04  0B  --  005DF0
3E  C5  2E  04  0B  26  E4  2A  01  45  8A  64  1A  3E  01  FE  --  005E00
8A  64  1A  3E  C5  2E  61  EA  36  C4  2E  01  45  88  63  76  --  005E10
C4  2E  02  45  88  63  76  3E  C5  2E  04  0B  26  E4  2A  05  --  005E20
04  0B  26  E4  2A  01  45  8A  64  1A  3E  C5  2E  61  EA  36  --  005E30

00  3D  83  61  B6  3E  C5  2E  03  45  88  63  76  3E  C5  2E  --  005E40
BE  83  FE  DE  86  FF  04  EB  00  00  FE  DE  86  C7  58  74  --  005E50
3E  C5  2E  61  F2  36  C4  2E  00  97  E9  03  7C  04  FE  DE  --  005E60
3E  C5  2E  04  0B  26  E4  2A  05  8A  FE  DE  BE  03  64  12  --  005E70
3E  C5  2E  61  EA  36  C4  2E  05  88  FE  DE  BE  03  63  6A  --  005E80
3E  C5  2E  04  0B  26  E4  2A  05  8A  FE  DE  BE  03  64  12  --  005E90
00  00  FE  DE  86  C7  B0  EB  05  88  FE  DE  BE  03  63  66  --  005EA0
36  C4  2E  42  7D  04  FE  DE  BE  83  FE  DE  86  FF  04  EB  --  005EB0
26  E4  2A  05  8A  FE  DE  BE  03  64  12  3E  C5  2E  61  EA  --  005EC0
36  C4  2E  05  88  FE  DE  BE  03  63  6A  3E  C5  2E  04  0B  --  005ED0
26  E4  2A  05  8A  FE  DE  BE  03  64  12  3E  C5  2E  61  F2  --  005EE0
16  B3  EB  05  88  FE  DE  BE  03  63  66  3E  C5  2E  04  0B  --  005EF0
50  F2  46  89  C0  2B  50  F0  46  89  C0  2B  50  FE  46  8D  --  005F00
20  B8  50  F6  46  89  00  3F  B8  50  F4  46  89  00  01  B8  --  005F10
46  89  C0  2B  50  FA  46  89  00  04  B8  50  F8  46  89  00  --  005F20
16  16  C4  83  00  64  40  D0  9A  01  4F  68  09  6A  50  FC  --  005F30
F2  46  89  00  FF  B8  50  F0  46  89  C0  2B  50  FE  46  8D  --  005F40
B8  50  F6  46  89  00  3F  B8  50  F4  46  89  00  01  B8  50  --  005F50
89  C0  2B  50  FA  46  89  00  01  B8  50  F8  46  89  00  20  --  005F60
16  C4  83  00  64  40  D0  9A  01  4F  68  09  6A  50  FC  46  --  005F70
FE  DE  BE  83  FE  DE  86  FF  04  EB  00  00  FE  DE  86  C7  --  005F80
05  FE  DE  86  8B  FE  DE  BE  03  1F  16  FD  8B  15  7F  1F  --  005F90
86  8D  16  50  FE  46  8D  16  E0  EB  FE  F0  85  88  00  20  --  005FA0
6A  00  6A  20  6A  10  6A  50  FE  F0  86  8D  16  50  FE  E0  --  005FB0
7E  83  18  C4  83  00  64  40  D0  9A  01  43  68  0A  6A  00  --  005FC0
C9  02  C4  83  00  64  59  DC  9A  FE  76  FF  0B  74  00  FE  --  005FD0
```

36

```
68 21 6A 00 14 1D 33 9A EC 8B 55 57 56 CB 5E 5F -- 005FE0
57 56 CB 5E 5F C9 04 C4 83 00 5C B3 44 9A 00 FF -- 005FF0
62 1A 3E C5 2E 00 00 FE 46 C7 00 00 04 C8 01 FE -- 006000
2E E7 D1 FE 7E 8B 00 BB E9 03 7C 05 3B FE 46 8B -- 006010
05 74 FF FF 3D 05 8B 62 20 1E 8E 2E 62 1E 3E 03 -- 006020
FC 46 FF 03 EB FC 46 89 FE 46 8B D6 EB FE 46 FF -- 006030
8B 57 56 7E 7E FC 46 3B 48 05 8B 62 1A 3E C5 2E -- 006040
52 63 34 16 8B 2E 63 32 06 03 2E 03 E0 C1 FC 46 -- 006050
16 8B 2E 63 32 06 03 2E 03 E0 C1 40 FC 46 8B 50 -- 006060
00 5C FE EC 9A 35 FF 64 1E 3E C5 2E 50 52 63 34 -- 006070
1E 8E 2E 62 1E 3E 03 2E E7 D1 47 FC 7E 8B 5E 5F -- 006080
8E 2E 62 1E 3E 03 2E E7 D1 FC 7E 8B 05 8B 62 20 -- 006090
62 6E 3E 03 2E E7 D1 47 FC 7E 8B 05 89 62 20 1E -- 0060A0
6E 3E 03 2E E7 D1 FC 7E 8B 05 8B 62 70 1E 8E 2E -- 0060B0
62 1A 3E C5 2E FF 72 E9 05 89 62 70 1E 8E 2E 62 -- 0060C0
C5 2E EC 8B 55 57 56 CB 5E 5F C9 FF 36 E9 0D FF -- 0060D0
DE 3E C5 2E 00 1C BC 1E 9A 00 01 05 C7 61 F6 3E -- 0060E0
EB 00 01 05 C7 61 DE 3E C5 2E 0B 75 00 3D 83 61 -- 0060F0
C9 00 14 57 F8 9A 00 00 05 C7 61 DE 3E C5 2E 09 -- 006100
01 05 C7 64 22 3E C5 2E EC 8B 55 57 56 CB 5E 5F -- 006110
00 00 0A C8 57 56 CB 5E 5F C9 00 1C C0 F0 9A 00 -- 006120
00 6A 00 01 05 C7 64 26 3E C5 2E 00 00 FE 46 C7 -- 006130
00 6A 00 6A 00 6A 00 6A 02 C4 83 00 14 55 74 9A -- 006140
C0 2B 01 6A 01 6A 64 2A 36 FF 2E 64 2C 36 FF 2E -- 006150
00 54 C9 5C 9A 50 FC 46 89 00 01 B8 50 FA 46 89 -- 006160
36 FF 2E 50 F8 46 89 C0 2B 00 6A 00 6A 14 C4 83 -- 006170
2E 36 FF 2E 64 30 36 FF 2E 64 32 36 FF 2E 64 34 -- 006180
00 54 CB 7F 9A 63 CE 36 FF 2E 63 D0 36 FF 2E 64 -- 006190
50 FE 46 8D 16 16 05 C6 63 E2 3E C5 2E 12 C4 83 -- 0061A0
6E 6A 05 6A 01 6A 63 E2 36 FF 2E 63 E4 36 FF 2E -- 0061B0
C8 1C 9A 00 54 CF 43 9A 0E C4 83 00 64 40 D0 9A -- 0061C0
00 0A 7E 83 00 00 02 C8 57 56 CB 5E 5F C9 00 54 -- 0061D0

64 4E E3 9A 35 FF 02 75 FF 63 DE 3E C5 2E 12 74 -- 0061E0
C4 83 00 64 4E A1 9A 01 00 68 04 6A 04 C4 83 00 -- 0061F0
75 C2 0B 02 55 89 05 89 63 DE 3E C5 2E 04 01 FE -- 006200
2E 00 8E E9 02 C4 83 00 64 59 DC 9A D3 03 68 0E -- 006210
46 C7 05 89 64 32 3E C5 2E 40 05 8B 61 BA 3E C5 -- 006220
FE 46 8B 64 32 3E C5 2E FE 46 FF 03 EB 00 01 FE -- 006230
26 02 E7 C1 FE 7E 8B 63 DE 36 C4 2E 69 7F 05 3B -- 006240
E7 D1 FE 7E 8B 05 89 FE 46 8B 02 5C 8E 26 3C 03 -- 006250
75 00 02 3D 05 8B 63 94 1E 8E 2E 63 92 3E 03 2E -- 006260
FE 7E 8B 63 DE 36 C4 2E 05 8B 61 EA 3E C5 2E 1E -- 006270
2E A6 EB 02 45 89 02 5C 8E 26 3C 03 26 02 E7 C1 -- 006280
E7 C1 FE 7E 8B 63 DE 36 C4 2E 05 8B 61 F2 3E C5 -- 006290
5E 5F C9 88 EB 02 45 89 02 5C 8E 26 3C 03 26 02 -- 0062A0
64 4E A1 9A 01 00 68 24 6A 00 00 14 C8 57 56 CB -- 0062B0
C5 2E 02 55 89 05 89 61 D6 3E C5 2E 04 C4 83 00 -- 0062C0
FF 2E 01 6A 01 6A 12 6A 64 74 00 3D 83 61 B6 3E -- 0062D0
36 FF 2E 62 D0 36 FF 2E 63 BE 36 FF 2E 63 C0 36 -- 0062E0
EC 46 8D 16 50 52 0C C4 83 00 5C 93 FD 9A 62 CE -- 0062F0
C5 2E 00 6A 00 FF 68 0A C4 83 00 5C ED 6E 9A 50 -- 006300
FF 50 FE 46 89 00 01 B8 35 FF 02 75 FF 61 D6 3E -- 006310
46 8D 16 0E C4 83 00 64 43 5D 9A EC 76 FF EE 76 -- 006320
D6 3E C5 2E 17 EB 04 C4 83 00 5C 94 D5 9A 50 EC -- 006330
BC 9A 04 C4 83 00 1C A6 5D 9A 35 FF 02 75 FF 61 -- 006340
3E C5 2E 00 00 0E C8 57 56 CB 5E 5F C9 00 4C 00 -- 006350
FA 46 FF 03 EB 00 01 FA 46 C7 00 00 05 C7 64 26 -- 006360
2E 00 BA E9 03 7E 05 3B FA 46 8B 61 BA 3E C5 2E -- 006370
5C 8E 26 3C 03 26 F8 8B 24 FA 46 6B 61 D6 36 C4 -- 006380
```

EP 0 533 348 A2

```
46 6B 61 D6 36 C4 2E F2 46 88 E4 2A 04 45 8A 02 -- 006390
E4 2A 06 45 8A 02 5C 8E 26 3C 03 26 F8 8B 24 FA -- 0063A0
03 26 F8 8B 24 FA 46 6B 61 D6 36 C4 2E F3 46 88 -- 0063B0
36 C4 2E F4 46 88 E4 2A 08 45 8A 02 5C 8E 26 3C -- 0063C0
8A 02 5C 8E 26 3C 03 26 F8 8B 24 FA 46 6B 61 D6 -- 0063D0
36 36 FF 2E 62 38 36 FF 2E F5 46 88 E4 2A 0A 45 -- 0063E0
01 97 68 06 6A 50 F7 46 8D 16 50 F2 46 8D 16 62 -- 0063F0
F6 46 88 FA 46 8B 10 C4 83 00 64 40 D0 9A 01 FE -- 006400
2B 50 F6 46 8D 16 62 36 36 FF 2E 62 38 36 FF 2E -- 006410
01 32 68 06 6A 50 FE 46 89 C0 2B 50 FC 46 89 C0 -- 006420
56 CB 5E 5F C9 FF 34 E9 10 C4 83 00 64 40 D0 9A -- 006430
33 9A 07 74 00 3D 83 61 DA 3E C5 2E EC 8B 55 57 -- 006440
57 56 CB 5E 5F C9 00 14 1E A9 9A 05 EB 00 14 1D -- 006450
23 88 9A 07 74 00 3D 83 61 DE 3E C5 2E EC 8B 55 -- 006460
55 57 56 CB 5E 5F C9 00 14 2A 25 9A 05 EB 00 14 -- 006470
14 30 D8 9A 07 74 00 3D 83 61 E2 3E C5 2E EC 8B -- 006480
08 C8 57 56 CB 5E 5F C9 00 14 32 90 9A 05 EB 00 -- 006490
64 36 3E C5 2E 00 00 05 C7 62 52 3E C5 2E 00 00 -- 0064A0
46 C7 4F 74 00 3D 83 63 46 3E C5 2E 00 01 05 C7 -- 0064B0
FF 03 EB FA 46 89 05 8B 63 46 3E C5 2E 00 00 FC -- 0064C0
7E 8B 2F 7D 05 3B FC 46 8B 62 1A 3E C5 2E FC 46 -- 0064D0
3D 05 8B 62 20 1E 8E 2E 62 1E 3E 03 2E E7 D1 FC -- 0064E0
8E 2E 62 6E 3E 03 2E E7 D1 FC 7E 8B DB 74 FF FF -- 0064F0
FA 7E 83 C2 EB FA 46 89 FA 46 23 05 8B 62 70 1E -- 006500
6A 00 6A 50 FE 46 8D 16 3A EB 00 01 B8 05 74 00 -- 006510
68 0A 6A 01 6A 00 6A 00 6A 00 6A 00 6A 00 6A 00 -- 006520
C6 64 3A 3E C5 2E 18 C4 83 00 64 40 D0 9A 01 43 -- 006530
00 01 05 C7 62 52 3E C5 2E 00 44 57 C9 9A 00 05 -- 006540
56 3E C5 2E 00 00 02 C8 57 56 CB 5E 5F C9 C0 2B -- 006550
2E FE 46 FF 03 EB 00 00 FE 46 C7 00 00 05 C7 62 -- 006560
E7 D1 FE 7E 8B 1F 7D 05 3B FE 46 8B 62 1A 3E C5 -- 006570

74 FF FF 3D 05 8B 62 20 1E 8E 2E 62 1E 3E 03 2E -- 006580
57 56 CB 5E 5F C9 00 01 05 C7 62 56 3E C5 2E DB -- 006590
42 3E C5 2E 00 03 05 C7 64 3E 3E C5 2E EC 8B 55 -- 0065A0
C5 2E 00 09 05 C7 63 3A 3E C5 2E 00 01 05 C7 64 -- 0065B0
C4 83 00 64 4E 56 9A 50 02 E0 C1 05 8B 63 3A 3E -- 0065C0
56 CB 5E 5F C9 02 55 89 05 89 63 36 3E C5 2E 02 -- 0065D0
0A 6A 00 6A 50 F6 46 8D 16 57 56 00 00 0A C8 57 -- 0065E0
03 9A 0A 6A 50 F6 46 8D 16 5E 5F 00 8C 00 02 9A -- 0065F0
36 FF 2E 64 48 36 FF 2E 06 C4 83 00 5C D0 01 FE -- 006600
0B 08 C4 83 00 64 5A 20 9A 50 F6 46 8D 16 64 46 -- 006610
FF 2E 4A EB 00 01 05 C7 64 3E 3E C5 2E 0B 75 C0 -- 006620
5A 20 9A 50 F6 46 8D 16 64 4A 36 FF 2E 64 4C 36 -- 006630
05 C7 64 3E 3E C5 2E 0B 75 C0 0B 08 C4 83 00 64 -- 006640
8D 16 64 4E 36 FF 2E 64 50 36 FF 2E 24 EB 00 03 -- 006650
2E 09 75 C0 0B 08 C4 83 00 64 5A 20 9A 50 F6 46 -- 006660
48 05 8B 64 3E 3E C5 2E 00 05 05 C7 64 3E 3E C5 -- 006670
36 C4 2E 05 89 64 42 3E C5 2E 64 52 3E F7 2E 99 -- 006680
3A 3E C5 2E 2C F7 26 05 8B 64 3E 3E C5 2E 64 3E -- 006690
3E 3E C5 2E EC 8B 55 57 56 CB 5E 5F C9 05 89 63 -- 0066A0
8A C8 57 56 CB 5E 5F C9 05 89 0A 7E C5 05 8B 64 -- 0066B0
00 01 F4 46 C7 00 01 F6 46 C7 00 F8 46 C6 00 00 -- 0066C0
9B E8 D9 9B 00 DF 46 C6 00 E1 46 C6 01 F2 46 C6 -- 0066D0
B9 46 FE 03 EB 00 B9 46 C6 00 B8 46 C6 D2 5E D9 -- 0066E0
2E E6 D1 F0 8B E4 2A B9 46 8A 3C 73 04 B9 7E 80 -- 0066F0
05 8B 63 FE 3E C5 2E 63 04 06 8E 2E 63 02 36 03 -- 006700
2E F8 8B B8 46 FE E4 2A B8 46 8A D8 74 04 23 26 -- 006710
05 88 E4 2A B9 46 8A 63 44 1E 8E 2E 63 42 3E 03 -- 006720
FF 7A 86 89 02 55 8B 05 8B 63 FA 3E C5 2E BB EB -- 006730
```

38

```
02 75 FF 63 FA 3E C5 2E 02 6A 00 6A FF 7C 96 89 -- 006740
96 13 FF 7A 86 03 08 C4 83 00 5C EE D0 9A 35 FF -- 006750
EC 83 50 FF 7E 86 8D 16 FE 56 89 FC 46 89 FF 7C -- 006760
C4 8B 16 63 12 36 FF 2E 63 14 36 FF 2E 34 6A 34 -- 006770
14 5E AB 9A 0A C4 83 00 5C ED 6E 9A 50 00 08 05 -- 006780
8D 16 50 AA 46 8D 16 50 A6 46 8D 16 38 C4 83 00 -- 006790
AA 46 D9 9B 0C C4 83 00 64 26 2C 9A 50 FF 7E 86 -- 0067A0
EE 46 89 08 C4 83 00 5C EE 2F 9A 00 5C ED 99 9A -- 0067B0
56 19 EE 46 29 99 05 8B 64 42 3E C5 2E F0 56 89 -- 0067C0
64 54 3E C5 2E B4 46 89 05 8B 64 3E 3E C5 2E F0 -- 0067D0
73 05 3B 37 7F 06 7C 02 55 3B F0 56 8B EE 46 8B -- 0067E0
55 1B 05 2B F0 56 8B EE 46 8B 64 54 3E C5 2E 33 -- 0067F0
03 99 05 8B 64 3E 3E C5 2E CA 8B D8 8B 02 01 FE -- 006800
02 55 8B 05 8B 64 54 3E C5 2E B4 46 89 D1 13 C3 -- 006810
C5 2E CA 8B D8 8B 99 B4 46 8B F0 56 89 EE 46 89 -- 006820
7C F0 56 3B D1 1B C3 2B 02 55 8B 05 8B 63 FA 3E -- 006830
8B 05 8B 63 FA 3E C5 2E 13 73 EE 46 3B 18 7F 07 -- 006840
03 99 B4 46 8B B4 46 89 F0 56 1B EE 46 2B 02 55 -- 006850
56 89 EA 46 89 00 DA 83 00 01 2D F0 56 13 EE 46 -- 006860
76 FF EC 76 FF 50 E2 46 8D 16 50 FA 46 8D 16 EC -- 006870
50 E4 2A F2 46 88 00 02 B8 EE 76 FF F0 76 FF EA -- 006880
F8 46 8A 50 D2 46 8D 16 50 E4 2A F3 46 88 C0 2B -- 006890
DA 3E C5 2E 50 E4 2A F9 46 88 00 01 B8 50 E4 2A -- 0068A0
7E 83 20 C4 83 00 2C 6F 1C 9A 35 FF 02 75 FF 62 -- 0068B0
00 64 28 52 9A FA 76 FF 01 6A 00 6A 0F 74 00 FA -- 0068C0
5C EE 2F 9A 00 5C ED 99 9A A6 46 D9 9B 06 C4 83 -- 0068D0
8B 64 42 3E C5 2E E8 56 89 E6 46 89 08 C4 83 00 -- 0068E0
89 05 8B 64 3E 3E C5 2E E8 56 19 E6 46 29 99 05 -- 0068F0
02 55 3B E8 56 8B E6 46 8B 64 58 3E C5 2E B2 46 -- 006900
E6 46 8B 64 58 3E C5 2E 33 73 05 3B 37 7F 06 7C -- 006910

3E 3E C5 2E CA 8B D8 8B 02 55 1B 05 2B E8 56 8B -- 006920
64 58 3E C5 2E B2 46 89 D1 13 C3 03 99 05 8B 64 -- 006930
64 3E 3E C5 2E E8 56 89 E6 46 89 02 55 8B 05 8B -- 006940
55 8B 05 8B 64 5C 3E C5 2E CA 8B D8 8B 99 05 8B -- 006950
73 E6 46 3B 18 7F 07 7C E8 56 3B D1 1B C3 2B 02 -- 006960
56 1B E6 46 2B 02 55 8B 05 8B 64 5C 3E C5 2E 13 -- 006970
8A 50 E4 2A DF 46 8A 50 FA 46 8D 16 B2 46 89 E8 -- 006980
76 FF E4 76 FF E6 76 FF E8 76 FF 50 E4 2A E1 46 -- 006990
6A 0F 74 00 FA 7E 83 10 C4 83 00 2C 79 D7 9A E2 -- 0069A0
46 C6 06 C4 83 00 64 28 52 9A FA 76 FF 01 6A 00 -- 0069B0
0A E9 03 7F 00 CE 7E 83 CE 46 89 B2 46 8B 00 B7 -- 0069C0
50 D6 46 8D 16 50 DA 46 8D 16 50 FA 46 8D 16 01 -- 0069D0
E2 76 FF E4 76 FF 50 AE 46 8D 16 50 CC 46 8D 16 -- 0069E0
00 6A 0F 74 00 FA 7E 83 18 C4 83 00 2C 96 CF 9A -- 0069F0
8B 06 C4 83 00 64 28 52 9A FA 76 FF 01 6A 01 FE -- 006A00
CE 46 C7 CC 46 89 CE 46 8B 0D 7D CC 46 3B CE 46 -- 006A10
83 CC 4E FF 03 EB CE 46 29 CC 46 8B 0B EB 00 00 -- 006A20
8B CA 46 FF 03 EB 00 00 CA 46 C7 95 7E 00 CC 7E -- 006A30
B9 46 FE 03 EB 00 B9 46 C6 77 7D B4 46 3B CA 46 -- 006A40
C5 2E DE 73 05 3B E4 2A B9 46 8A 62 E2 3E C5 2E -- 006A50
02 55 8B 05 03 B7 46 FE E4 2A B7 46 8A 63 36 3E -- 006A60
B9 46 8A 50 FC 46 8D 16 FF 78 96 89 FF 76 86 89 -- 006A70
7A 86 89 08 C4 83 00 5C EE E8 9A 50 52 99 E4 2A -- 006A80
C6 8B 37 03 26 CA 76 8B D6 5E C4 FF 7C 96 89 FF -- 006A90
8E AE 7E 03 F8 8B FF 7C 96 13 FF 7A 86 03 D2 2B -- 006AA0
8D 16 8F EB 05 88 FF 76 BE C5 E4 2A 05 8A B0 5E -- 006AB0
EE E2 9A 50 52 99 05 8B 62 E2 3E C5 2E 50 FC 46 -- 006AC0
B2 46 8B FF 4F E9 05 01 D6 7E C5 08 C4 83 00 5C -- 006AD0
FF 50 FA 46 8D 16 05 89 63 3E 3E C5 2E B4 6E F7 -- 006AE0
```

39

```
FA  7E  83  08  C4  83  00  2C  A0  F7  9A  E2  76  FF  E4  76  --  006AF0
83  00  64  28  52  9A  FA  76  FF  01  6A  00  6A  0F  74  00  --  006B00
C5  12  46  8B  EC  8B  55  57  56  CB  5E  5F  C9  9B  06  C4  --  006B10
16  46  8B  02  45  89  3E  7E  C5  14  46  8B  05  89  3E  7E  --  006B20
9B  06  45  89  3E  7E  C5  18  46  8B  04  45  89  3E  7E  C5  --  006B30
7E  C5  1E  46  D9  9B  08  5D  D9  9B  3E  7E  C5  1A  46  D9  --  006B40
10  5D  D9  9B  3E  7E  C5  22  46  D9  9B  0C  5D  D9  9B  3E  --  006B50
C5  2A  46  D9  9B  14  5D  D9  9B  3E  7E  C5  26  46  D9  9B  --  006B60
5D  D9  9B  3E  7E  C5  2E  46  D9  9B  18  5D  D9  9B  3E  7E  --  006B70
36  46  D9  9B  20  5D  D9  9B  3E  7E  C5  32  46  D9  9B  1C  --  006B80
1A  C8  57  56  CB  5E  5F  C9  9B  24  5D  D9  9B  3E  7E  C5  --  006B90
83  00  5C  ED  AF  9A  FE  76  FF  FF  FF  FE  46  C7  00  00  --  006BA0
ED  AF  9A  35  FF  64  64  3E  C5  2E  E6  5E  DD  9B  02  C4  --  006BB0
3E  C5  2E  EE  5E  DD  9B  E6  76  DC  9B  02  C4  83  00  5C  --  006BC0
EE  46  DC  9B  02  C4  83  00  5C  ED  AF  9A  35  FF  64  60  --  006BD0
9B  02  C4  83  00  5C  ED  AF  9A  FE  76  FF  FA  5E  D9  9B  --  006BE0
83  00  5C  ED  AF  9A  35  FF  64  6C  3E  C5  2E  E6  5E  DD  --  006BF0
68  3E  C5  2E  EE  5E  DD  9B  E6  76  DC  9B  02  C4  01  FE  --  006C00
9B  EE  46  DC  9B  02  C4  83  00  5C  ED  AF  9A  35  FF  64  --  006C10
5E  D9  9B  FA  6E  D8  9B  64  70  06  DD  2E  9B  F6  5E  D9  --  006C20
9B  F6  5E  D9  9B  F6  6E  D8  9B  64  70  06  DD  2E  9B  FA  --  006C30
94  9A  EE  5E  DC  9B  FA  46  D9  9B  EE  5E  DD  9B  EE  D9  --  006C40
9B  FA  46  D9  9B  07  EB  FA  46  D9  9B  06  76  00  5C  ED  --  006C50
9B  39  77  00  5C  ED  94  9A  64  78  1E  DC  2E  9B  E0  D9  --  006C60
94  9A  E6  5E  DC  9B  F6  46  D9  9B  E6  5E  DD  9B  EE  D9  --  006C70
9B  F6  46  D9  9B  07  EB  F6  46  D9  9B  06  76  00  5C  ED  --  006C80
C5  09  77  00  5C  ED  94  9A  64  78  1E  DC  2E  9B  E0  D9  --  006C90
9B  00  00  05  C7  0A  7E  C5  07  EB  00  01  05  C7  0A  7E  --  006CA0
C7  62  1A  3E  C5  2E  00  00  02  C8  57  56  CB  5E  5F  C9  --  006CB0

6A  62  1E  36  FF  2E  62  20  36  FF  2E  57  56  00  00  05  --  006CC0
8B  62  1A  3E  C5  2E  5E  5F  00  8C  00  02  9A  20  6A  00  --  006CD0
07  95  9A  00  14  07  4D  9A  05  89  62  22  3E  C5  2E  05  --  006CE0
01  54  68  04  6A  20  6A  22  6A  50  FE  46  8D  16  00  14  --  006CF0
00  05  C7  62  3A  3E  C5  2E  0C  C4  83  00  64  40  D0  9A  --  006D00
2E  00  6A  62  3E  36  FF  2E  62  40  36  FF  2E  57  56  00  --  006D10
3E  C5  2E  5E  5F  00  8C  00  02  9A  35  FF  62  42  3E  C5  --  006D20
36  FF  2E  62  4C  36  FF  2E  57  56  00  00  05  C7  62  46  --  006D30
00  8C  00  02  9A  35  FF  62  42  3E  C5  2E  00  6A  62  4A  --  006D40
62  52  3E  C5  2E  00  00  05  C7  62  4E  3E  C5  2E  5E  5F  --  006D50
3E  C5  2E  00  00  05  C7  62  56  3E  C5  2E  00  01  05  C7  --  006D60
2E  00  01  05  C7  62  5E  3E  C5  2E  00  01  05  C7  62  5A  --  006D70
83  00  64  4E  56  9A  0C  6A  00  01  05  C7  62  62  3E  C5  --  006D80
66  3E  C5  2E  02  55  89  05  89  62  66  3E  C5  2E  02  C4  --  006D90
02  55  89  05  89  62  6A  3E  C5  2E  02  55  8B  05  8B  62  --  006DA0
00  0A  45  C7  00  00  08  45  C7  3D  C5  62  66  3E  C5  2E  --  006DB0
6A  00  6A  62  6E  36  FF  2E  62  70  36  FF  2E  57  56  00  --  006DC0
2E  62  74  36  FF  2E  57  56  5E  5F  00  8C  00  02  9A  20  --  006DD0
16  5E  5F  00  8C  00  02  9A  20  6A  00  6A  62  72  36  FF  --  006DE0
01  F7  68  03  6A  35  FF  62  82  3E  C5  2E  50  FE  46  8D  --  006DF0
86  76  CB  5E  5F  C9  0A  C4  83  00  64  40  D0  9A  01  FE  --  006E00
86  94  00  3C  86  92  00  3C  7A  DE  00  3C  86  7A  00  3C  --  006E10
77  8C  00  3C  B3  10  00  3C  90  C2  00  3C  86  54  00  3C  --  006E20
B3  2A  00  3C  B3  14  00  3C  7D  A8  00  24  77  A8  00  24  --  006E30
86  60  00  3C  86  5E  00  24  77  90  00  24  F4  CB  00  3C  --  006E40
7A  E6  00  3C  91  10  00  3C  7A  E4  00  3C  86  62  00  3C  --  006E50
86  9A  00  6C  2D  2A  00  3C  86  64  00  3C  91  0E  00  3C  --  006E60
90  7A  00  3C  86  1A  00  3C  86  1E  00  3C  86  16  00  3C  --  006E70
7C  D6  00  3C  7C  FC  00  3C  90  7E  00  3C  86  22  00  3C  --  006E80
7D  6C  00  3C  85  F2  00  3C  85  F0  00  3C  7C  FA  00  3C  --  006E90
```

40

```
7C 56 00 3C 7D 00 00 3C 7A BA 00 3C 7D 0C 00 3C -- 006EA0
86 82 00 3C 7B D6 00 3C 7C FE 00 3C 7A BC 00 3C -- 006EB0
7D A4 00 3C 7D A6 00 3C 86 7C 00 3C 86 78 00 3C -- 006EC0
85 AE 00 3C 7A EC 00 3C 7A E8 00 3C 7D A2 00 3C -- 006ED0
7A DA 00 3C 86 26 00 3C 86 9C 00 3C 85 CE 00 3C -- 006EE0
90 A0 00 6C 2C EA 00 3C 7A DC 00 3C 86 28 00 3C -- 006EF0
2D 02 00 6C 2D 12 00 3C AE DA 00 6C 2C DA 00 3C -- 006F00
2C DC 00 3C 90 A4 00 6C 2C EE 00 3C AE D6 00 6C -- 006F10
AE D8 00 6C 2D 04 00 6C 2D 16 00 3C AE DC 00 6C -- 006F20
86 A2 00 6C 32 24 00 6C 2D 06 00 6C 2C DE 00 3C -- 006F30
91 4C 00 3C 91 42 00 6C 32 32 00 3C 86 F6 00 3C -- 006F40
7A BE 00 3C 7B 46 00 3C 91 4D 00 3C 91 4A 00 3C -- 006F50
6E 6E 00 3C 7D AE 00 3C 6E 84 00 3C 6E 86 00 3C -- 006F60
7D 04 00 3C 7A CC 00 3C 7A CA 00 3C 7A D2 00 3C -- 006F70
7D 9F 00 3C 7D 9E 00 3C 7D 08 00 3C 7D 6E 00 3C -- 006F80
7D 8A 00 3C 7D 86 00 3C 7D A1 00 3C 7D A0 00 3C -- 006F90
86 90 00 3C 86 86 00 3C 86 88 00 3C 7B 56 00 3C -- 006FA0
7C F6 00 3C 86 7E 00 6C 31 52 00 3C 86 8C 00 3C -- 006FB0
86 6E 00 3C 85 EE 00 3C 7A 8E 00 3C 7C F8 00 3C -- 006FC0
7A F6 00 3C 86 56 00 3C 86 5A 00 3C 7A F0 00 3C -- 006FD0
86 2E 00 3C 86 34 00 3C 86 30 00 3C 7A FA 00 3C -- 006FE0
77 94 00 3C 86 40 00 3C 86 2C 00 3C 86 38 00 3C -- 006FF0
00 3C B4 2A 00 3C B3 16 00 3C AF 10 00 24 01 FE -- 007000
00 3C 7A A6 00 3C 7A 9F 00 3C 86 A0 00 3C 7D AA -- 007010
00 3C 91 14 00 3C 90 C4 00 3C B1 10 00 3C B3 12 -- 007020
00 3C 90 FC 00 3C 90 D8 00 3C 90 EA 00 3C 90 C6 -- 007030
00 3C 91 12 00 3C 7D 0E 00 3C AE B4 00 3C AE 60 -- 007040
00 3C 91 64 00 24 77 96 00 3C 91 18 00 3C 86 6A -- 007050

00 3C 91 80 00 3C 91 6C 00 3C 91 5C 00 3C 91 74 -- 007060
00 24 77 A0 00 24 77 98 00 3C 86 14 00 3C 91 4E -- 007070
00 3C 86 52 00 3C 86 50 00 3C 86 4C 00 3C 90 36 -- 007080
00 44 5F E2 00 3C AF 0E 00 3C 86 66 00 3C 7A E2 -- 007090
00 3C 90 71 00 6C 27 C4 00 3C 86 68 00 6C 28 74 -- 0070A0
00 3C 7A B0 00 3C 7A AD 00 3C 86 84 00 3C 7A E0 -- 0070B0
91 7C 00 3C 91 84 00 3C 91 88 00 02 00 3C 7A B3 -- 0070C0
AE E4 00 3C AE E2 00 3C AE E0 00 3C AE DE 00 3C -- 0070D0
62 4D D2 F1 A9 FC 3F F0 00 00 00 00 00 00 00 3C -- 0070E0
06 05 C7 B5 76 3E C5 2E 00 00 04 C8 57 56 3F 50 -- 0070F0
36 FF 2E 00 01 05 C7 0A 7E C5 00 64 22 15 9A 00 -- 007100
C4 83 00 64 24 00 9A 01 6A B5 7A 36 FF 2E B5 7C -- 007110
89 B5 7E 3E C5 2E E4 2A 05 8A B5 82 3E C5 2E 06 -- 007120
FF 2E 12 7E 00 3D 83 05 89 B5 86 3E C5 2E 48 05 -- 007130
04 C4 83 00 5C 97 1E 9A B5 8A 36 FF 2E B5 8C 36 -- 007140
3D 83 B5 86 3E C5 2E 3C 75 C0 0B 00 5C 69 2F 9A -- 007150
97 1E 9A B5 8E 36 FF 2E B5 90 36 FF 2E 12 7E 00 -- 007160
00 6A 00 6A 00 02 05 C7 0A 7E C5 04 C4 83 00 5C -- 007170
B8 0A C4 83 00 64 28 52 9A 12 62 68 00 6A 00 6A -- 007180
9A B5 92 36 FF 2E B5 94 36 FF 2E 04 30 E9 FF FF -- 007190
83 B5 96 3E C5 2E FC 46 89 04 C4 83 00 64 52 82 -- 0071A0
3E C5 2E 00 00 05 C7 B5 9A 3E C5 2E 1F 75 00 3D -- 0071B0
9E 36 FF 2E B5 A0 36 FF 2E 31 7E 00 3D 83 B5 86 -- 0071C0
86 3E C5 2E 00 01 05 C7 B5 9A 3E C5 2E 1D EB B5 -- 0071D0
B5 A2 36 FF 2E B5 A4 36 FF 2E 12 7E 00 3D 83 B5 -- 0071E0
00 3D 83 B5 A6 3E C5 2E 04 C4 83 00 5C 97 1E 9A -- 0071F0
3E C5 2E 00 01 05 C7 B5 AA 3E C5 2E 27 75 01 FE -- 007200
AE 36 FF 2E B5 B0 36 FF 2E 1D 7E 00 3D 83 B5 86 -- 007210
B5 AA 3E C5 2E 09 EB 04 C4 83 00 5C 97 1E 9A B5 -- 007220
FF 2E B5 B6 36 FF 2E B5 B8 36 FF 2E 00 00 05 C7 -- 007230
08 C4 83 00 64 46 0E 9A B5 B2 36 FF 2E B5 B4 36 -- 007240
```

41

```
00  3D  83  05  75  26  78  00  02  7D  83  B5  B2  3E  C5  2E  --  007250
B5  86  3E  C5  2E  00  01  05  C7  B5  BA  3E  C5  2E  1F  74  --  007260
EB  B5  BE  36  FF  2E  B5  C0  36  FF  2E  31  7E  00  3D  83  --  007270
83  B5  86  3E  C5  2E  00  00  05  C7  B5  BA  3E  C5  2E  1D  --  007280
1E  9A  B5  C2  36  FF  2E  B5  C4  36  FF  2E  12  7E  00  3D  --  007290
23  7E  00  3D  83  B5  86  3E  C5  2E  04  C4  83  00  5C  97  --  0072A0
FF  02  75  FF  B5  B2  3E  C5  2E  35  FF  B5  B6  3E  C5  2E  --  0072B0
00  5C  97  1E  9A  B5  C6  36  FF  2E  B5  C8  36  FF  2E  35  --  0072C0
E9  03  7F  00  02  3D  05  8B  B5  7E  3E  C5  2E  0A  C4  83  --  0072D0
5C  97  1E  9A  B5  CA  36  FF  2E  B5  CC  36  FF  2E  00  9A  --  0072E0
FF  2E  B5  86  36  FF  2E  B5  88  36  FF  2E  04  C4  83  00  --  0072F0
08  C4  83  00  5C  81  AC  9A  B5  CE  36  FF  2E  B5  D0  36  --  007300
D2  36  FF  2E  B5  D4  36  FF  2E  35  FF  B5  86  3E  C5  2E  --  007310
05  8B  B5  AA  3E  C5  2E  06  C4  83  00  5C  97  1E  9A  B5  --  007320
9A  B5  D6  36  FF  2E  B5  D8  36  FF  2E  47  75  00  01  3D  --  007330
AA  36  FF  2E  B5  AC  36  FF  2E  04  C4  83  00  5C  97  1E  --  007340
00  5C  81  AC  9A  B5  DA  36  FF  2E  B5  DC  36  FF  2E  B5  --  007350
2E  B5  E0  36  FF  2E  35  FF  B5  AA  3E  C5  2E  08  C4  83  --  007360
86  3E  C5  2E  06  C4  83  00  5C  97  1E  9A  B5  DE  36  FF  --  007370
3E  C5  2E  35  FF  B5  AA  3E  C5  2E  2E  7E  00  3D  83  B5  --  007380
B5  7E  3E  C5  2E  35  FF  B5  86  3E  C5  2E  35  FF  B5  E6  --  007390
5C  97  1E  9A  B5  E2  36  FF  2E  B5  E4  36  FF  2E  35  FF  --  0073A0
03  74  00  01  3D  05  8B  B5  BA  3E  C5  2E  0C  C4  83  00  --  0073B0
00  3D  83  B5  86  3E  C5  2E  00  34  D9  7E  9A  00  A9  E9  --  0073C0
5C  97  1E  9A  B5  EA  36  FF  2E  B5  EC  36  FF  2E  12  7E  --  0073D0
9B  9A  B5  EE  36  FF  2E  B5  F0  36  FF  2E  04  C4  83  00  --  0073E0
12  7E  00  3D  83  B5  86  3E  C5  2E  04  C4  83  00  34  EE  --  0073F0

5C  97  1E  9A  B5  F2  36  FF  2E  B5  F4  36  FF  2E  01  FE  --  007400
BA  9A  B5  F6  36  FF  2E  B5  F8  36  FF  2E  04  C4  83  00  --  007410
12  7E  00  3D  83  B5  86  3E  C5  2E  04  C4  83  00  34  ED  --  007420
83  00  5C  97  1E  9A  B5  FA  36  FF  2E  B5  FC  36  FF  2E  --  007430
35  FF  B6  02  3E  C5  2E  35  FF  B6  06  3E  C5  2E  04  C4  --  007440
FF  02  75  FF  B5  B2  3E  C5  2E  35  FF  B5  FE  3E  C5  2E  --  007450
C5  2E  00  34  DA  22  9A  0A  C4  83  00  4C  33  18  9A  35  --  007460
00  64  4E  A1  9A  35  FF  02  6A  3C  48  05  C7  B6  0A  3E  --  007470
3E  C5  2E  02  55  89  05  89  B6  0E  3E  C5  2E  04  C4  83  --  007480
06  68  35  FF  B6  0A  3E  C5  2E  1E  7E  00  3D  83  B5  86  --  007490
97  1E  9A  B6  12  36  FF  2E  B6  14  36  FF  2E  0C  6A  05  --  0074A0
75  05  0B  02  45  8B  B6  0E  3E  C5  2E  0A  C4  83  00  5C  --  0074B0
B6  18  36  FF  2E  12  7E  00  3D  83  B5  86  3E  C5  2E  3C  --  0074C0
6A  00  6A  04  C4  83  00  5C  97  1E  9A  B6  16  36  FF  2E  --  0074D0
0A  C4  83  00  64  28  52  9A  13  11  68  00  6A  00  6A  00  --  0074E0
FE  46  C7  00  CC  E9  FF  FE  B8  00  02  05  C7  0A  7E  C5  --  0074F0
03  2E  02  E7  C1  FE  7E  8B  2B  7D  0C  FE  7E  83  00  00  --  007500
FE  46  69  B6  0E  36  C4  2E  B6  1C  1E  8E  2E  B6  1A  3E  --  007510
46  FF  02  55  89  05  89  02  54  8B  26  04  03  26  0A  0C  --  007520
22  3E  C5  2E  00  32  05  C7  B6  1E  3E  C5  2E  CF  EB  FE  --  007530
C5  2E  00  00  05  C7  B6  26  3E  C5  2E  00  00  05  C7  B6  --  007540
00  00  05  C7  B6  2E  3E  C5  2E  00  01  05  C7  B6  2A  3E  --  007550
05  C7  B6  36  3E  C5  2E  00  00  05  C7  B6  32  3E  C5  2E  --  007560
7E  00  3D  83  B5  86  3E  C5  2E  00  14  81  FE  9A  00  00  --  007570
00  5C  97  1E  9A  B6  3A  36  FF  2E  B6  3C  36  FF  2E  12  --  007580
0C  76  FF  00  14  91  6B  9A  00  14  D3  0C  9A  04  C4  83  --  007590
B5  86  3E  C5  2E  04  C4  83  00  14  69  7E  9A  0A  76  FF  --  0075A0
9A  B6  3E  36  FF  2E  B6  40  36  FF  2E  12  7E  00  3D  83  --  0075B0
55  57  56  CB  5E  5F  C9  C0  2B  04  C4  83  00  5C  97  1E  --  0075C0
44  36  FF  2E  12  7E  00  3D  83  B5  86  3E  C5  2E  EC  8B  --  0075D0
C0  2B  04  C4  83  00  5C  97  1E  9A  B6  42  36  FF  2E  B6  --  0075E0
83  B5  86  3E  C5  2E  00  00  02  C8  57  56  CB  5E  5F  C9  --  0075F0
```

42

```
3E  C5  2E  35  FF  B6  4E  3E  C5  2E  27  7E  00  3D  01  FE  --  007600
B6  48  36  FF  2E  35  FF  B6  4A  3E  C5  2E  35  FF  B6  22  --  007610
3E  C5  2E  0A  C4  83  00  5C  97  1E  9A  B6  46  36  FF  2E  --  007620
4A  3E  C5  2E  00  54  86  14  9A  05  75  00  3D  83  B5  AA  --  007630
3D  83  B5  86  3E  C5  2E  00  D1  E9  03  74  00  3D  83  B6  --  007640
97  1E  9A  B6  52  36  FF  2E  B6  54  36  FF  2E  12  7E  00  --  007650
B6  60  36  FF  2E  01  6A  02  6A  12  6A  04  C4  83  00  5C  --  007660
9A  B6  5A  36  FF  2E  B6  5C  36  FF  2E  B6  5E  36  FF  2E  --  007670
FF  2E  B6  58  36  FF  2E  50  52  0C  C4  83  00  5C  93  FD  --  007680
B6  62  3E  C5  2E  0A  C4  83  00  5C  ED  6E  9A  B6  56  36  --  007690
2E  19  7E  00  3D  83  B5  86  3E  C5  2E  40  74  00  3D  83  --  0076A0
B6  66  36  FF  2E  B6  68  36  FF  2E  35  FF  B6  62  3E  C5  --  0076B0
00  6A  00  6A  00  6A  00  6A  06  C4  83  00  5C  97  1E  9A  --  0076C0
B8  0A  C4  83  00  64  28  52  9A  35  FF  B6  62  3E  C5  2E  --  0076D0
C5  2E  00  01  05  C7  B6  4A  3E  C5  2E  01  B0  E9  FF  FF  --  0076E0
FF  B6  4A  3E  C5  2E  20  7E  00  01  3D  05  8B  B5  86  3E  --  0076F0
36  FF  2E  B6  6C  36  FF  2E  35  FF  B6  62  3E  C5  2E  35  --  007700
83  B5  86  3E  C5  2E  08  C4  83  00  5C  97  1E  9A  B6  6A  --  007710
1E  9A  B6  6E  36  FF  2E  B6  70  36  FF  2E  12  7E  00  3D  --  007720
B6  74  36  FF  2E  50  FE  46  8D  16  04  C4  83  00  5C  97  --  007730
9A  35  FF  02  75  FF  B6  56  3E  C5  2E  B6  72  36  FF  2E  --  007740
3E  C5  2E  2D  74  00  FE  7E  83  0C  C4  83  00  54  F6  E3  --  007750
2E  B6  78  36  FF  2E  FE  76  FF  15  7E  00  3D  83  B5  86  --  007760
00  6A  00  6A  06  C4  83  00  5C  97  1E  9A  B6  76  36  FF  --  007770
8A  B6  7E  3E  C5  2E  FF  4D  E9  FE  76  FF  00  6A  00  6A  --  007780
8B  B6  82  3E  C5  2E  05  89  B6  7A  3E  C5  2E  E4  2A  05  --  007790

B5  86  3E  C5  2E  4A  74  00  0F  3D  4F  74  00  07  3D  05  --  0077A0
88  36  FF  2E  35  FF  B6  82  3E  C5  2E  19  7E  00  3D  83  --  0077B0
46  C7  06  C4  83  00  5C  97  1E  9A  B6  86  36  FF  2E  B6  --  0077C0
52  9A  FE  76  FF  00  6A  00  6A  00  6A  00  6A  16  01  FE  --  0077D0
80  26  9A  00  02  05  C7  0A  7E  C5  0A  C4  83  00  64  28  --  0077E0
8A  3E  C5  2E  05  8B  B6  8E  3E  C5  2E  FE  EA  E9  00  14  --  0077F0
8A  3E  C5  2E  05  8B  B6  92  3E  C5  2E  05  89  B6  01  FE  --  007800
89  48  04  03  26  05  8B  B6  96  36  C4  2E  02  45  89  B6  --  007810
45  89  48  04  03  26  02  45  8B  B6  9A  36  C4  2E  04  45  --  007820
B6  8A  3E  C5  2E  22  7E  00  3D  83  B5  86  3E  C5  2E  06  --  007830
B6  A0  36  FF  2E  35  FF  04  75  FF  02  75  FF  06  75  FF  --  007840
3E  C5  2E  0C  C4  83  00  5C  97  1E  9A  B6  9E  36  FF  2E  --  007850
05  C7  B6  A2  3E  C5  2E  09  75  00  01  3D  05  8B  B5  AA  --  007860
4A  3E  C5  2E  19  7E  00  3D  83  B5  86  3E  C5  2E  00  00  --  007870
97  1E  9A  B6  A6  36  FF  2E  B6  A8  36  FF  2E  35  FF  B6  --  007880
00  8A  C8  57  56  CB  5E  5F  C9  C0  2B  06  C4  83  00  5C  --  007890
E1  46  C6  00  E3  46  C6  01  EC  46  C6  00  EE  46  C6  00  --  0078A0
D9  9B  E8  D9  9B  00  00  DA  46  C7  00  00  D8  46  C7  00  --  0078B0
00  3D  83  B5  86  3E  C5  2E  00  01  FF  7E  86  C7  B6  5E  --  0078C0
B6  AE  3E  C5  2E  50  40  05  8B  B6  4E  3E  C5  2E  29  7E  --  0078D0
FF  2E  B6  AC  36  FF  2E  35  FF  B6  7A  3E  C5  2E  35  FF  --  0078E0
05  C7  0A  7E  C5  0A  C4  83  00  5C  97  1E  9A  B6  AA  36  --  0078F0
08  3D  05  74  00  0C  3D  05  8B  B6  4E  3E  C5  2E  00  01  --  007900
8B  B6  4E  3E  C5  2E  00  02  05  C7  0A  7E  C5  07  75  00  --  007910
05  C7  0A  7E  C5  39  7E  00  08  3D  05  7F  00  0C  3D  05  --  007920
B4  36  FF  2E  12  7E  00  3D  83  B5  86  3E  C5  2E  00  03  --  007930
00  6A  04  C4  83  00  5C  97  1E  9A  B6  B2  36  FF  2E  B6  --  007940
C4  83  00  64  28  52  9A  16  05  68  00  6A  00  6A  00  6A  --  007950
C4  83  00  5C  E0  79  9A  50  80  46  8D  16  09  87  E9  0A  --  007960
8D  16  09  49  E9  03  75  00  3D  83  B6  B6  3E  C5  2E  04  --  007970
83  FF  7C  86  89  04  C4  83  00  34  F9  24  9A  50  80  46  --  007980
8D  16  00  34  D9  7E  9A  09  4B  E9  03  75  03  FF  7C  BE  --  007990
00  34  DA  22  9A  04  C4  83  00  5C  29  2E  9A  50  80  46  --  0079A0
```

43

```
A2 3E C5 2E 09 75 00 01 3D 05 8B B5 AA 3E C5 2E -- 0079B0
C5 2E 00 01 05 C7 B6 BA 3E C5 2E 00 00 05 C7 B6 -- 0079C0
00 00 05 C7 B6 32 3E C5 2E 00 00 05 C7 B6 2E 3E -- 0079D0
05 FF B6 4E 3E C5 2E 00 00 05 C7 B6 BE 3E C5 2E -- 0079E0
35 8B B6 4E 3E C5 2E 05 89 B6 C2 3E C5 2E 05 8B -- 0079F0
1E 8E 2E B6 C6 3E 03 2E F8 8B 1E C6 6B 4E 01 FE -- 007A00
6B 4E 35 8B B6 4E 3E C5 2E 00 01 1C 45 C7 B6 C8 -- 007A10
45 C7 B6 C8 1E 8E 2E B6 C6 3E 03 2E F8 8B 1E C6 -- 007A20
F8 8B 1E C6 6B 4E 35 8B B6 4E 3E C5 2E 00 01 1A -- 007A30
46 C7 00 05 05 C7 B6 C8 1E 8E 2E B6 C6 3E 03 2E -- 007A40
0D 8B B6 4E 3E C5 2E 28 7D 04 B4 7E 83 00 00 B4 -- 007A50
B6 C6 3E 03 2E E7 D1 B4 7E 8B F0 8B 1E C1 6B 49 -- 007A60
EB B4 46 FF 00 00 0A 45 C7 FE 03 B6 C8 1E 8E 2E -- 007A70
7D 04 B4 7E 83 00 00 B4 46 C7 00 00 B2 46 C7 D2 -- 007A80
B6 CC 06 8E 2E B6 CA 36 03 2E E6 D1 B4 76 8B 30 -- 007A90
FF B2 7E 8B 10 74 04 23 26 05 8B B6 82 3E C5 2E -- 007AA0
EB B4 46 FF AC 45 88 B4 46 8B 1F 16 FD 03 B2 46 -- 007AB0
03 2E F8 8B 1E C6 6B 4E 35 8B B6 4E 3E C5 2E CA -- 007AC0
12 5D D9 9B 90 46 D9 9B B6 C8 1E 8E 2E B6 C6 3E -- 007AD0
3E 03 2E F8 8B 1E C6 6B 4E 35 8B B6 4E 3E C5 2E -- 007AE0
2E 16 5D D9 9B 94 46 D9 9B B6 C8 1E 8E 2E B6 C6 -- 007AF0
78 96 89 FF 76 86 89 02 55 8B 05 8B B6 D6 3E C5 -- 007B00
9B 90 46 D9 9B B6 CE 3E C5 2E B6 D2 36 C4 2E FF -- 007B10
2E F8 5E D9 9B FF 76 86 DA 9B 34 DC 26 9B 0D DC -- 007B20
78 96 89 FF 76 86 89 02 55 8B 05 8B B6 E2 3E C5 -- 007B30

9B 94 46 D9 9B B6 DA 3E C5 2E B6 DE 36 C4 2E FF -- 007B40
2E F4 5E D9 9B FF 76 86 DA 9B 34 DC 26 9B 0D DC -- 007B50
78 96 89 FF 76 86 89 02 55 8B 05 8B B6 E6 3E C5 -- 007B60
83 00 5C EE D0 9A 35 FF 02 75 FF 02 6A 00 6A FF -- 007B70
FE 56 89 FC 46 89 FF 78 96 13 FF 76 86 03 08 C4 -- 007B80
00 DA 83 00 01 2D 02 55 8B 05 8B B6 E6 3E C5 2E -- 007B90
9B F4 46 D9 9B B6 AE 3E C5 2E EA 56 89 E8 46 89 -- 007BA0
89 08 C4 83 00 5C EE 2F 9A 00 5C ED 99 9A 25 DE -- 007BB0
00 00 C8 46 C7 0A 79 00 CA 7E 83 CA 56 89 C8 46 -- 007BC0
DE 9B F4 46 D9 9B B6 AE 3E C5 2E 00 00 CA 46 C7 -- 007BD0
46 89 08 C4 83 00 5C EE 2F 9A 00 5C ED 99 9A 05 -- 007BE0
01 2D 02 55 8B 05 8B B6 EA 3E C5 2E C6 56 89 C4 -- 007BF0
C4 46 3B 1B 7F 07 7C C6 56 3B 00 DA 83 00 01 FE -- 007C00
83 00 01 2D 02 55 8B 05 8B B6 EA 3E C5 2E 16 73 -- 007C10
46 D9 9B B6 AE 3E C5 2E C6 56 89 C4 46 89 00 DA -- 007C20
C4 83 00 5C EE 2F 9A 00 5C ED 99 9A 25 DE 9B F8 -- 007C30
D0 46 C7 0A 79 00 D2 7E 83 D2 56 89 D0 46 89 08 -- 007C40
F8 46 D9 9B B6 AE 3E C5 2E 00 00 D2 46 C7 00 00 -- 007C50
08 C4 83 00 5C EE 2F 9A 00 5C ED 99 9A 05 DE 9B -- 007C60
02 55 8B 05 8B B6 E6 3E C5 2E CE 56 89 CC 46 89 -- 007C70
CC 46 3B 1B 7F 07 7C CE 56 3B 00 DA 83 00 01 2D -- 007C80
83 00 01 2D 02 55 8B 05 8B B6 E6 3E C5 2E 16 73 -- 007C90
46 2B CE 56 8B CC 46 8B CE 56 89 CC 46 89 00 DA -- 007CA0
8B C4 46 8B 50 52 00 D2 83 00 01 05 D2 56 1B D0 -- 007CB0
50 52 00 D2 83 00 01 05 CA 56 1B C8 46 2B C6 56 -- 007CC0
EE 3E F7 2E 99 C2 46 89 08 C4 83 00 5C EE DC 9A -- 007CD0
A2 E9 03 7F 00 3D 83 B5 86 3E C5 2E C0 46 89 B6 -- 007CE0
03 2E F8 8B 1E C7 6B 4F 3C 8B B6 4E 36 C5 2E 00 -- 007CF0
5C ED 99 9A 16 45 D9 9B B6 C8 1E 8E 2E B6 C6 3E -- 007D00
03 2E F8 8B 1E C7 6B 4F 3C 8B B6 4E 36 C5 2E 00 -- 007D10
5C ED 99 9A 12 45 D9 9B B6 C8 1E 8E 2E B6 C6 3E -- 007D20
00 5C 97 1E 9A B6 F0 36 FF 2E B6 F2 36 FF 2E 00 -- 007D30
3E C5 2E 35 FF 02 75 FF B6 EA 3E C5 2E 14 C4 83 -- 007D40
F4 36 FF 2E B6 F6 36 FF 2E 35 FF 02 75 FF B6 E6 -- 007D50
```

44

```
FF  C4  76  FF  C6  76  FF  0C  C4  83  00  5C  97  1E  9A  B6  --  007D60
76  FF  D2  76  FF  CC  76  FF  CE  76  FF  C8  76  FF  CA  76  --  007D70
00  5C  97  1E  9A  B6  F8  36  FF  2E  B6  FA  36  FF  2E  D0  --  007D80
83  00  14  95  7B  9A  35  FF  B6  4E  3E  C5  2E  14  C4  83  --  007D90
3B  B4  46  8B  B6  7A  3E  C5  2E  00  00  B4  46  C7  02  C4  --  007DA0
8E  2E  B6  FC  3E  03  2E  02  E7  C1  B4  7E  8B  1B  7D  05  --  007DB0
C5  2E  D9  EB  B4  46  FF  1D  D9  9B  EE  D9  9B  B6  FE  1E  --  007DC0
B5  86  3E  C5  2E  00  B6  E9  03  74  00  3D  83  B6  4A  3E  --  007DD0
9A  B7  00  36  FF  2E  B7  02  36  FF  2E  12  7E  00  3D  83  --  007DE0
36  FF  2E  01  6A  02  6A  12  6A  04  C4  83  00  5C  97  1E  --  007DF0
FF  2E  B6  5C  36  FF  2E  B6  5E  36  FF  2E  B6  60  01  FE  --  007E00
36  FF  2E  50  52  0C  C4  83  00  5C  93  FD  9A  B6  5A  36  --  007E10
2E  0A  C4  83  00  5C  ED  6E  9A  B6  56  36  FF  2E  B6  58  --  007E20
FF  2E  B7  06  36  FF  2E  12  7E  00  3D  83  B5  86  3E  C5  --  007E30
B6  62  3E  C5  2E  04  C4  83  00  5C  97  1E  9A  B7  04  36  --  007E40
2E  19  7E  00  3D  83  B5  86  3E  C5  2E  35  74  00  3D  83  --  007E50
B7  08  36  FF  2E  B7  0A  36  FF  2E  35  FF  B6  62  3E  C5  --  007E60
00  6A  00  6A  00  6A  00  6A  06  C4  83  00  5C  97  1E  9A  --  007E70
C7  B6  4A  3E  C5  2E  FA  D5  E9  35  FF  B6  62  3E  C5  2E  --  007E80
36  FF  2E  12  7E  00  3D  83  B5  86  3E  C5  2E  00  01  05  --  007E90
16  04  C4  83  00  5C  97  1E  9A  B7  0C  36  FF  2E  B7  0E  --  007EA0
FF  E8  76  FF  EA  76  FF  50  E4  46  8D  16  50  F2  46  8D  --  007EB0
C0  2B  50  E4  2A  EC  46  88  00  02  B8  D8  76  FF  DA  76  --  007EC0
E4  2A  EE  46  8A  50  B6  46  8D  16  50  E4  2A  ED  46  88  --  007ED0

FF  B6  56  3E  C5  2E  50  E4  2A  EF  46  88  00  01  B8  50  --  007EE0
00  F2  7E  83  20  C4  83  00  2C  6F  1C  9A  35  FF  02  75  --  007EF0
2E  F2  76  FF  15  7E  00  3D  83  B5  86  3E  C5  2E  2D  74  --  007F00
C4  83  00  5C  97  1E  9A  B7  10  36  FF  2E  B7  12  36  FF  --  007F10
2E  FA  30  E9  F2  76  FF  00  6A  00  6A  00  6A  00  6A  06  --  007F20
FF  2E  B7  16  36  FF  2E  12  7E  00  3D  83  B5  86  3E  C5  --  007F30
50  F2  46  8D  16  04  C4  83  00  5C  97  1E  9A  B7  14  36  --  007F40
FF  CA  76  FF  50  E4  2A  E3  46  8A  50  E4  2A  E1  46  8A  --  007F50
10  C4  83  00  2C  79  D7  9A  E4  76  FF  E6  76  FF  C8  76  --  007F60
A1  7E  00  3D  83  B5  86  3E  C5  2E  19  74  00  F2  7E  83  --  007F70
C7  8A  EB  B7  18  36  FF  2E  B7  1A  36  FF  2E  F2  76  FF  --  007F80
3B  CA  56  8B  C8  46  8B  00  00  BE  46  C7  00  00  F0  46  --  007F90
31  E9  03  76  C4  46  3B  01  39  E9  03  7E  0D  7C  C6  56  --  007FA0
3E  C5  2E  BE  46  FF  00  94  E9  03  74  00  F0  7E  83  01  --  007FB0
36  FF  2E  12  75  01  BE  7E  83  2D  7E  00  3D  83  B5  86  --  007FC0
FF  04  C4  83  00  5C  97  1E  9A  B7  1C  36  FF  2E  B7  1E  --  007FD0
5C  97  1E  9A  B7  20  36  FF  2E  B7  22  36  FF  2E  BE  76  --  007FE0
8D  16  50  DC  46  8D  16  50  F2  46  8D  16  06  C4  83  00  --  007FF0
FF  50  A8  46  8D  16  50  F0  46  8D  16  50  BA  46  01  FE  --  008000
F2  7E  83  18  C4  83  00  2C  96  CF  9A  E4  76  FF  E6  76  --  008010
FE  F3  E9  03  7F  00  3D  83  B5  86  3E  C5  2E  28  74  00  --  008020
B7  24  36  FF  2E  B7  26  36  FF  2E  F2  76  FF  BE  76  FF  --  008030
00  00  B2  46  C7  FE  D8  E9  08  C4  83  00  5C  97  1E  9A  --  008040
05  8B  BC  5E  8E  BA  7E  03  E7  D1  B2  46  FF  B2  7E  8B  --  008050
B6  7A  3E  C5  2E  00  00  B0  46  C7  F0  4E  FF  B4  46  89  --  008060
D4  46  89  D2  56  8B  D0  46  8B  62  7D  05  3B  B0  46  8B  --  008070
3E  7F  07  7C  CE  56  3B  D6  56  8B  D4  46  8B  D6  56  89  --  008080
5E  8E  A8  4E  7E  03  B4  7E  03  D4  7E  8B  39  77  CC  46  3B  --  008090
7E  8B  02  C4  83  00  5C  ED  AF  9A  50  E4  2A  05  8A  AA  --  0080A0
D8  9B  B6  FE  1E  8E  2E  B6  FC  3E  03  2E  02  E7  C1  B0  --  0080B0
46  8B  B5  EB  00  D6  56  83  01  D4  46  83  1D  D9  9B  05  --  0080C0
CA  56  83  01  C8  46  83  92  EB  B0  46  FF  B4  46  01  FC  --  0080D0
FF  2E  12  7E  00  3D  83  B5  86  3E  C5  2E  FE  B7  E9  00  --  0080E0
04  C4  83  00  5C  97  1E  9A  B7  28  36  FF  2E  B7  2A  36  --  0080F0
00  2C  A0  F7  9A  E4  76  FF  E6  76  FF  50  F2  46  8D  16  --  008100
```

45

EP 0 533 348 A2

```
3D 83 B5 86 3E C5 2E 1D 74 00 F2 7E 83 08 C4 83 -- 008110
FF 2E B7 2E 36 FF 2E F2 76 FF FD FD E9 03 7F 00 -- 008120
B6 7A 3E C5 2E 00 00 B0 46 C7 FD E5 E9 B7 2C 36 -- 008130
02 E7 C1 B0 7E 8B 00 AB E9 03 7C 05 3B B0 46 8B -- 008140
46 DE 9B 05 D9 9B B6 FE 1E 8E 2E B6 FC 3E 03 2E -- 008150
00 5C ED 99 9A B7 30 06 DC 2E 9B C2 76 DE 9B C0 -- 008160
49 0D 8B B6 4E 3E C5 2E 08 C4 83 00 5C ED F9 9A -- 008170
2E B6 C6 3E 03 2E E7 D1 B0 7E 8B F2 8B 1E D1 6B -- 008180
0D 8B B6 4E 3E C5 2E 02 45 89 FE 03 B6 C8 1E 8E -- 008190
B6 C6 3E 03 2E E7 D1 B0 7E 8B F0 8B 1E C1 6B 49 -- 0081A0
E7 C1 B0 7E 8B 02 45 DF 9B FE 03 B6 C8 1E 8E 2E -- 0081B0
7E 8B 1D D9 9B B6 FE 1E 8E 2E B6 FC 3E 03 2E 02 -- 0081C0
C1 B0 7E 8B 05 D9 9B B6 FC 3E 03 2E 02 E7 C1 B0 -- 0081D0
FF 1D D9 9B B7 3A 1E 8E 2E B7 38 3E 03 2E 02 E7 -- 0081E0
75 00 03 3D 05 8B B6 7A 3E C5 2E FF 46 E9 B0 46 -- 0081F0
F8 8B 1E C6 6B 4E 35 8B B6 4E 3E C5 2E 3A 01 FE -- 008200
9B 00 FF 08 45 C7 B6 C8 1E 8E 2E B6 C6 3E 03 2E -- 008210
2E 9B 0C 5D D9 9B B6 FC 3E C5 2E B7 3C 06 DD 2E -- 008220
3E C5 2E 0C 5D D9 9B B7 38 3E C5 2E B7 3C 06 DD -- 008230
0C 45 D9 9B B6 FC 3E C5 2E 49 7E 00 3D 83 B5 86 -- 008240
99 9A 08 45 D9 9B B6 FC 3E C5 2E 00 5C ED 99 9A -- 008250
5C ED 99 9A 04 45 D9 9B B6 FC 3E C5 2E 00 5C ED -- 008260
FF 2E 00 5C ED 99 9A 05 D9 9B B6 FC 3E C5 2E 00 -- 008270

24 C4 83 00 5C 97 1E 9A B7 44 36 FF 2E B7 46 36 -- 008280
2E B7 4A 36 FF 2E 12 7E 00 3D 83 B5 86 3E C5 2E -- 008290
14 CF 56 9A 04 C4 83 00 5C 97 1E 9A B7 48 36 FF -- 0082A0
B7 4E 36 FF 2E 12 7E 00 3D 83 B5 86 3E C5 2E 00 -- 0082B0
EB C0 2B 04 C4 83 00 5C 97 1E 9A B7 4C 36 FF 2E -- 0082C0
54 9E 1E 9A 50 80 46 8D 16 50 FF 7A 86 8D 16 27 -- 0082D0
7E C5 F6 B5 E9 03 75 00 FF 7A BE 83 08 C4 83 00 -- 0082E0
C8 57 56 CB 5E 5F C9 9B FF FF B8 00 04 05 C7 0A -- 0082F0
3E C5 2E 27 7E 00 3D 83 B5 86 3E C5 2E 00 00 02 -- 008300
B6 22 3E C5 2E 35 FF B6 2A 3E C5 2E 35 FF B5 AA -- 008310
5C 97 1E 9A B7 50 36 FF 2E B7 52 36 FF 2E 35 FF -- 008320
31 75 00 01 3D 05 8B B6 22 3E C5 2E 0A C4 83 00 -- 008330
C5 2E 23 7D 00 FE 7E 83 FE 46 89 00 14 A6 EB 9A -- 008340
FF 2E B7 56 36 FF 2E 50 13 7E 00 3D 83 B5 86 3E -- 008350
74 E9 FE 46 8B 06 C4 83 00 5C 97 1E 9A B7 54 36 -- 008360
2E 05 89 B7 58 3E C5 2E 05 8B B6 8A 3E C5 2E 01 -- 008370
2E 02 45 89 B7 58 3E C5 2E 02 45 8B B6 8A 3E C5 -- 008380
2E 04 45 89 B7 58 3E C5 2E 04 45 8B B6 8A 3E C5 -- 008390
2E 06 45 89 B7 58 3E C5 2E 06 45 8B B6 8A 3E C5 -- 0083A0
75 FF B7 58 3E C5 2E 22 7E 00 3D 83 B5 86 3E C5 -- 0083B0
FF 2E B7 5E 36 FF 2E 35 FF 04 75 FF 02 75 FF 06 -- 0083C0
B5 AA 3E C5 2E 0C C4 83 00 5C 97 1E 9A B7 5C 36 -- 0083D0
AA 3E C5 2E 6A EB 00 14 7A 63 9A 07 75 00 3D 83 -- 0083E0
00 3D 83 B6 A2 3E C5 2E 33 75 00 01 3D 05 8B B5 -- 0083F0
F4 9A 05 74 00 3D 83 B6 B6 3E C5 2E 29 75 01 FE -- 008400
7A 63 9A 02 C4 83 00 14 B4 01 9A 01 6A 00 44 66 -- 008410
3E C5 2E 2B EB 00 01 05 C7 B6 A2 3E C5 2E 00 14 -- 008420
05 8B B6 A2 3E C5 2E 1F 75 00 01 3D 05 8B B5 AA -- 008430
50 05 89 B7 60 3E C5 2E 00 02 B8 13 75 00 01 3D -- 008440
00 05 C7 B6 2A 3E C5 2E 02 C4 83 00 14 A9 3D 9A -- 008450
3E C5 2E 37 75 00 01 3D 05 8B B6 4A 3E C5 2E 00 -- 008460
64 36 FF 2E B7 66 36 FF 2E 12 7E 00 3D 83 B5 86 -- 008470
FF 2E B6 58 36 FF 2E 04 C4 83 00 5C 97 1E 9A B7 -- 008480
B6 4A 3E C5 2E 04 C4 83 00 5C 94 D5 9A B6 56 36 -- 008490
FF 2E 37 7E 00 3D 83 B5 86 3E C5 2E 00 00 05 C7 -- 0084A0
04 C4 83 00 5C 97 1E 9A B7 68 36 FF 2E B7 6A 36 -- 0084B0
```

46

```
60 3E C5 2E 19 75 00 01 3D 05 8B B5 AA 3E C5 2E -- 0084C0
97 1E 9A B7 6C 36 FF 2E B7 6E 36 FF 2E 35 FF B7 -- 0084D0
00 34 C8 57 56 CB 5E 5F C9 C0 2B 06 C4 83 00 5C -- 0084E0
B7 72 36 FF 2E 12 7E 00 3D 83 B5 86 3E C5 2E 00 -- 0084F0
46 8D 16 04 C4 83 00 5C 97 1E 9A B7 70 36 FF 2E -- 008500
83 B6 B6 3E C5 2E 04 C4 83 00 5C E0 79 9A 50 D8 -- 008510
C4 83 00 34 F9 24 9A 50 D8 46 8D 16 1C 74 00 3D -- 008520
01 A5 E9 FF FF B8 06 74 02 CC 7E 83 CC 46 89 04 -- 008530
99 DA 46 8B D6 46 89 B6 EE 3E F7 2E 99 D8 46 8B -- 008540
99 04 8B B6 1E 36 C5 2E D4 46 89 B6 EE 3E F7 2E -- 008550
8B D6 46 89 C7 2B D6 46 8B F8 8B B6 EE 3E F7 2E -- 008560
46 89 C7 2B D4 46 8B F8 8B B6 EE 3E F7 2E 99 04 -- 008570
05 8B D2 46 89 D6 46 03 05 8B B6 1E 3E 8B 2E D4 -- 008580
05 3B D6 46 8B B6 8A 3E C5 2E D0 46 89 D4 46 03 -- 008590
3B D4 46 8B B6 8A 3E C5 2E D6 46 89 05 8B 05 7D -- 0085A0
8B B6 8A 3E C5 2E D4 46 89 02 45 8B 06 7D 02 45 -- 0085B0
3E C5 2E D2 46 89 04 45 8B 06 7E 04 45 3B D2 46 -- 0085C0
D0 46 89 06 45 8B 06 7E 06 45 3B D0 46 8B B6 8A -- 0085D0
46 3B D4 46 8B FF 4F E9 03 7E D2 46 3B D6 46 8B -- 0085E0
1C 7E 00 3D 83 B5 86 3E C5 2E FF 44 E9 03 7E D0 -- 0085F0
76 36 FF 2E D6 76 FF D2 76 FF 50 D0 76 FF 01 FE -- 008600
C5 2E 0C C4 83 00 5C 97 1E 9A B7 74 36 FF 2E B7 -- 008610

89 00 14 A6 EB 9A 31 75 00 01 3D 05 8B B6 22 3E -- 008620
00 3D 83 B5 86 3E C5 2E 42 7D 00 CE 7E 83 CE 46 -- 008630
97 1E 9A B7 78 36 FF 2E B7 7A 36 FF 2E 50 13 7E -- 008640
B5 AA 3E C5 2E 00 8C E9 CE 46 8B 06 C4 83 00 5C -- 008650
C4 83 00 14 B4 01 9A 01 6A 13 75 00 01 3D 05 8B -- 008660
3E C5 2E D6 46 8B 00 00 05 C7 B6 A2 3E C5 2E 02 -- 008670
04 45 89 D2 46 8B 02 45 89 D4 46 8B 05 89 B7 58 -- 008680
B6 22 3E C5 2E 00 14 7A 63 9A 06 45 89 D0 46 8B -- 008690
C5 2E 37 7E 00 3D 83 B5 86 3E C5 2E 00 01 05 C7 -- 0086A0
9A B7 7C 36 FF 2E B7 7E 36 FF 2E 35 FF B6 22 3E -- 0086B0
D2 76 FF D4 76 FF D0 76 FF 06 C4 83 00 5C 97 1E -- 0086C0
97 1E 9A B7 80 36 FF 2E B7 82 36 FF 2E D6 76 FF -- 0086D0
00 02 C8 57 56 CB 5E 5F C9 C0 2B 0C C4 83 00 5C -- 0086E0
B7 86 36 FF 2E 12 7E 00 3D 83 B5 86 3E C5 2E 00 -- 0086F0
7C 2A 9A 04 C4 83 00 5C 97 1E 9A B7 84 36 FF 2E -- 008700
90 3E C5 2E 2E 7E 00 3D 83 B5 86 3E C5 2E 00 14 -- 008710
FF B6 BE 3E C5 2E 35 FF B7 8C 3E C5 2E 35 FF B7 -- 008720
36 FF 2E B7 8A 36 FF 2E 35 FF B6 4E 3E C5 2E 35 -- 008730
83 B6 4E 3E C5 2E 0C C4 83 00 5C 97 1E 9A B7 88 -- 008740
01 3D 05 8B B6 BE 3E C5 2E 00 EA E9 03 75 00 3D -- 008750
00 01 3D 05 8B B5 AA 3E C5 2E 00 DB E9 03 74 00 -- 008760
B7 58 3E C5 2E 00 01 05 C7 B7 94 3E C5 2E 2A 75 -- 008770
60 3E C5 2E 00 02 B8 02 00 04 45 81 02 00 05 81 -- 008780
8C 3E C5 2E 02 C4 83 00 14 A9 3D 9A 50 05 89 B7 -- 008790
3B 74 00 3D 83 B7 90 3E C5 2E 45 74 00 3D 83 B7 -- 0087A0
2E B7 5A 36 FF 2E 50 FE 46 8D 16 00 14 B0 CC 9A -- 0087B0
00 FE 7E 83 08 C4 83 00 54 B1 00 9A B7 58 36 FF -- 0087C0
2E FE 76 FF 4B 7E 00 3D 83 B5 86 3E C5 2E 55 74 -- 0087D0
50 FE 46 8D 16 34 EB B7 98 36 FF 2E B7 9A 36 FF -- 0087E0
83 00 54 AD F0 9A B7 58 36 FF 2E B7 5A 36 FF 2E -- 0087F0
83 B5 86 3E C5 2E 1F 74 00 FE 7E 83 08 C4 01 FE -- 008800
9C 36 FF 2E B7 9E 36 FF 2E FE 76 FF 15 7E 00 3D -- 008810
05 8B B5 AA 3E C5 2E 06 C4 83 00 5C 97 1E 9A B7 -- 008820
6D 81 02 00 2D 81 B7 58 3E C5 2E 0E 75 00 01 3D -- 008830
36 FF 2E 61 7E 00 3D 83 B5 86 3E C5 2E 02 00 04 -- 008840
2E 04 C4 83 00 5C 97 1E 9A B7 A0 36 FF 2E B7 A2 -- 008850
05 8B B6 BE 3E C5 2E 0C 74 00 3D 83 B6 4E 3E C5 -- 008860
```

47

```
9A B7 A4 36 FF 2E B7 A6 36 FF 2E 14 74 00 01 3D -- 008870
05 8B B5 AA 3E C5 2E 25 EB 04 C4 83 00 5C 97 1E -- 008880
AA 36 FF 2E 35 FF B7 60 3E C5 2E 19 75 00 01 3D -- 008890
CO 2B 06 C4 83 00 5C 97 1E 9A B7 A8 36 FF 2E B7 -- 0088A0
05 C7 B6 BE 3E C5 2E EC 8B 55 57 56 CB 5E 5F C9 -- 0088B0
B5 86 3E C5 2E 00 00 05 C7 B7 AC 3E C5 2E 00 00 -- 0088C0
BA 3E C5 2E 35 FF B6 BE 3E C5 2E 27 7E 00 3D 83 -- 0088D0
2E B7 B2 36 FF 2E 35 FF B6 4E 3E C5 2E 35 FF B6 -- 0088E0
BA 3E C5 2E 0A C4 83 00 5C 97 1E 9A B7 B0 36 FF -- 0088F0
3E C5 2E 00 14 9A D0 9A 28 75 00 01 3D 05 8B B6 -- 008900
FF 2E 35 FF B6 4E 3E C5 2E 19 7E 00 3D 83 B5 86 -- 008910
06 C4 83 00 5C 97 1E 9A B7 B4 36 FF 2E B7 B6 36 -- 008920
83 B6 32 3E C5 2E 44 74 00 3D 83 B6 4E 3E C5 2E -- 008930
CO 0B 00 14 89 31 9A 00 14 8B D1 9A 31 74 00 3D -- 008940
BA 36 FF 2E 39 7E 00 3D 83 B5 86 3E C5 2E 1E 75 -- 008950
25 EB 04 C4 83 00 5C 97 1E 9A B7 B8 36 FF 2E B7 -- 008960
C5 2E 00 00 05 C7 B6 32 3E C5 2E 00 14 84 B0 9A -- 008970
BE 3E C5 2E 05 89 B7 AC 3E C5 2E 05 8B B6 4E 3E -- 008980
2E 19 7E 00 3D 83 B5 86 3E C5 2E 00 01 05 C7 B6 -- 008990
B7 BC 36 FF 2E B7 BE 36 FF 2E 35 FF B6 BE 3E C5 -- 0089A0
57 56 CB 5E 5F C9 CO 2B 06 C4 83 00 5C 97 1E 9A -- 0089B0

86 3E C5 2E 00 32 05 C7 B6 1E 3E C5 2E EC 8B 55 -- 0089C0
B7 CO 36 FF 2E B7 C2 36 FF 2E 12 7E 00 3D 83 B5 -- 0089D0
57 56 CB 5E 5F C9 CO 2B 04 C4 83 00 5C 97 1E 9A -- 0089E0
86 3E C5 2E 00 64 05 C7 B6 1E 3E C5 2E EC 8B 55 -- 0089F0
36 FF 2E B7 C6 36 FF 2E 12 7E 00 3D 83 B5 01 FE -- 008A00
CB 5E 5F C9 CO 2B 04 C4 83 00 5C 97 1E 9A B7 C4 -- 008A10
C5 2E 00 C8 05 C7 B6 1E 3E C5 2E EC 8B 55 57 56 -- 008A20
36 FF 2E B7 CA 36 FF 2E 12 7E 00 3D 83 B5 86 3E -- 008A30
CB 5E 5F C9 CO 2B 04 C4 83 00 5C 97 1E 9A B7 C8 -- 008A40
27 7E 00 3D 83 B5 86 3E C5 2E 00 00 04 C8 57 56 -- 008A50
C5 2E 35 FF B7 D0 3E C5 2E 35 FF B6 22 3E C5 2E -- 008A60
9A B7 CC 36 FF 2E B7 CE 36 FF 2E 35 FF B6 2A 3E -- 008A70
01 3D 05 8B B7 D0 3E C5 2E 0A C4 83 00 5C 97 1E -- 008A80
36 FF 2E 12 7E 00 3D 83 B5 86 3E C5 2E 28 75 00 -- 008A90
2E 04 C4 83 00 5C 97 1E 9A B7 D4 36 FF 2E B7 D6 -- 008AA0
B5 AA 3E C5 2E 01 83 E9 00 00 05 C7 B7 D0 3E C5 -- 008AB0
FF 2E B7 DA 36 FF 2E 50 00 01 B8 7B 75 00 3D 83 -- 008AC0
94 FB 9A B6 5A 36 FF 2E B6 5C 36 FF 2E B7 D8 36 -- 008AD0
C5 2E 36 74 00 FE 7E 83 FE 46 89 0A C4 83 00 5C -- 008AE0
FF 2E B7 DE 36 FF 2E 50 13 7E 00 3D 83 B5 86 3E -- 008AF0
6A 00 6A 00 6A 06 C4 83 00 5C 97 1E 9A B7 DC 36 -- 008B00
FF B8 0A C4 83 00 64 28 52 9A FE 76 FF 00 6A 00 -- 008B10
FF 2E 12 7E 00 3D 83 B5 86 3E C5 2E 01 1C E9 FF -- 008B20
04 C4 83 00 5C 97 1E 9A B7 E0 36 FF 2E B7 E2 36 -- 008B30
3E C5 2E 04 C4 83 00 14 69 7E 9A 50 FC 46 8D 16 -- 008B40
75 00 3D 83 B6 26 3E C5 2E 30 75 00 3D 83 B6 2A -- 008B50
2E 3F 74 00 FE 7E 83 FE 46 89 00 14 76 79 9A 26 -- 008B60
2E B7 E6 36 FF 2E 50 92 7E 00 3D 83 B5 86 3E C5 -- 008B70
01 3D 05 8B B6 22 3E C5 2E FF 7C E9 B7 E4 36 FF -- 008B80
3E C5 2E 11 75 00 3D 83 B6 26 3E C5 2E 1B 75 00 -- 008B90
C5 2E 00 14 7A 63 9A 05 75 00 01 3D 05 8B B7 E8 -- 008BA0
2E 35 FF B6 4E 3E C5 2E 20 7E 00 3D 83 B5 86 3E -- 008BB0
B7 EC 36 FF 2E B7 EE 36 FF 2E 35 FF B6 BA 3E C5 -- 008BC0
00 3D 83 B6 BA 3E C5 2E 08 C4 83 00 5C 97 1E 9A -- 008BD0
C5 2E 0C 74 00 01 3D 05 8B B7 F0 3E C5 2E 1C 75 -- 008BE0
C5 2E 07 EB FF 6A 13 75 00 01 3D 05 8B B7 F4 3E -- 008BF0
2E 02 C4 83 00 14 95 7B 9A 35 FF B6 4E 3E 01 FE -- 008C00
35 FF B6 22 3E C5 2E 27 7E 00 3D 83 B5 86 3E C5 -- 008C10
```

48

```
FF 2E 35 FF B6 2A 3E C5 2E 35 FF B7 D0 3E C5 2E -- 008C20
0A C4 83 00 5C 97 1E 9A B7 F8 36 FF 2E B7 FA 36 -- 008C30
B5 86 3E C5 2E EC 8B 55 57 56 CB 5E 5F C9 C0 2B -- 008C40
9A B7 FC 36 FF 2E B7 FE 36 FF 2E 12 7E 00 3D 83 -- 008C50
14 83 53 9A 00 14 80 26 9A 04 C4 83 00 5C 97 1E -- 008C60
B8 02 36 FF 2E 12 7E 00 3D 83 B5 86 3E C5 2E 00 -- 008C70
47 78 9A 04 C4 83 00 5C 97 1E 9A B8 00 36 FF 2E -- 008C80
06 36 FF 2E 12 7E 00 3D 83 B5 86 3E C5 2E 00 54 -- 008C90
C0 2B 04 C4 83 00 5C 97 1E 9A B8 04 36 FF 2E B8 -- 008CA0
C7 00 00 EA 46 C7 00 00 16 C8 57 56 CB 5E 5F C9 -- 008CB0
C5 2E 40 7E 00 3D 83 B5 86 3E C5 2E 00 00 EC 46 -- 008CC0
9A B8 08 36 FF 2E B8 0A 36 FF 2E 35 FF B5 AA 3E -- 008CD0
C5 2E 35 FF B6 26 3E C5 2E 06 C4 83 00 5C 97 1E -- 008CE0
0E 36 FF 2E 35 FF B6 22 3E C5 2E 35 FF B6 2A 3E -- 008CF0
C5 2E 0A C4 83 00 5C 97 1E 9A B8 0C 36 FF 2E B8 -- 008D00
B6 22 3E C5 2E 00 8F E9 03 74 00 3D 83 B5 AA 3E -- 008D10
74 00 3D 83 B6 2A 3E C5 2E 68 75 00 01 3D 05 8B -- 008D20
8B FC 56 89 FA 46 89 99 05 8B B7 58 3E C5 2E 5E -- 008D30
F2 46 89 99 04 45 8B F8 56 89 F6 46 89 99 02 45 -- 008D40
3E C5 2E F0 56 89 EE 46 89 99 06 45 8B F4 56 89 -- 008D50

76 FF EC 76 FF 50 FE 46 8D 16 00 00 05 C7 B6 22 -- 008D60
76 FF F8 76 FF F2 76 FF F4 76 FF EE 76 FF 52 EA -- 008D70
2E 18 C4 83 00 54 90 41 9A FA 76 FF FC 76 FF F6 -- 008D80
3D 83 B6 26 3E C5 2E 3A 75 00 3D 83 B6 2A 3E C5 -- 008D90
8B B5 AA 3E C5 2E 29 EB 00 14 A8 50 9A 30 75 00 -- 008DA0
02 C4 83 00 14 B4 01 9A 01 6A 1D 75 00 01 3D 05 -- 008DB0
00 14 A9 3D 9A 50 05 89 B7 60 3E C5 2E 00 01 B8 -- 008DC0
2E 53 75 00 01 3D 05 8B B6 4A 3E C5 2E 02 C4 83 -- 008DD0
FF 2E B8 12 36 FF 2E 12 7E 00 3D 83 B5 86 3E C5 -- 008DE0
B6 58 36 FF 2E 04 C4 83 00 5C 97 1E 9A B8 10 36 -- 008DF0
2E 04 C4 83 00 5C 94 D5 9A B6 56 36 FF 2E 01 FE -- 008E00
00 3D 83 B5 86 3E C5 2E 00 00 05 C7 B6 4A 3E C5 -- 008E10
5C 97 1E 9A B8 14 36 FF 2E B8 16 36 FF 2E 12 7E -- 008E20
81 FE 9A 00 00 05 C7 B6 22 3E C5 2E 04 C4 83 00 -- 008E30
7E 00 3D 83 B5 86 3E C5 2E 00 54 E5 EA 9A 00 14 -- 008E40
00 5C 97 1E 9A B8 18 36 FF 2E B8 1A 36 FF 2E 37 -- 008E50
2E 19 75 00 01 3D 05 8B B5 AA 3E C5 2E 04 C4 83 -- 008E60
B8 1C 36 FF 2E B8 1E 36 FF 2E 35 FF B7 60 3E C5 -- 008E70
57 56 CB 5E 5F C9 C0 2B 06 C4 83 00 5C 97 1E 9A -- 008E80
FF 2E 12 7E 00 3D 83 B5 86 3E C5 2E 00 00 02 C8 -- 008E90
04 C4 83 00 5C 97 1E 9A B8 20 36 FF 2E B8 22 36 -- 008EA0
50 40 FE 46 8B 12 7F 0C FE 7E 83 00 00 FE 46 C7 -- 008EB0
3E C5 2E E8 EB FE 46 FF 02 C4 83 00 14 82 71 9A -- 008EC0
2E 00 00 05 C7 B6 4E 3E C5 2E 00 00 05 C7 B6 C2 -- 008ED0
FF 2E B8 26 36 FF 2E 12 7E 00 3D 83 B5 86 3E C5 -- 008EE0
5E 5F C9 C0 2B 04 C4 83 00 5C 97 1E 9A B8 24 36 -- 008EF0
7E 00 3D 83 B5 86 3E C5 2E 00 00 02 C8 57 56 CB -- 008F00
1E 9A B8 28 36 FF 2E B8 2A 36 FF 2E 0A 76 FF 15 -- 008F10
0D 0A 7E 83 06 7C 01 0A 7E 83 06 C4 83 00 5C 97 -- 008F20
2E 0A 76 FF 15 7E 00 3D 83 B5 86 3E C5 2E 25 7E -- 008F30
C4 83 00 5C 97 1E 9A B8 2C 36 FF 2E B8 2E 36 FF -- 008F40
F8 8B 1E C6 6B 4E 0A 76 8B 00 88 E9 FF FF B8 06 -- 008F50
8B 00 00 1C 45 C7 B6 C8 1E 8E 2E B6 C6 3E 03 2E -- 008F60
1A 45 C7 B6 C6 3E 03 2E F8 8B 1E C6 6B 4E 0A 76 -- 008F70
B6 C6 3E 03 2E F8 8B 1E C6 6B 4E 0A 76 8B 00 00 -- 008F80
8B 3E 7D 04 FE 7E 83 00 00 FE 46 C7 00 05 05 C7 -- 008F90
3E 03 2E E7 D1 FE 7E 8B F0 8B 1E C1 6B 49 0A 4E -- 008FA0
4E 8B 00 FF 02 45 C7 FE 03 B6 C8 1E 8E 2E B6 C6 -- 008FB0
C6 3E 03 2E E7 D1 FE 7E 8B F0 8B 1E C1 6B 49 0A -- 008FC0
```

```
C9 C0 2B BC EB FE 46 FF 00 00 0A 45 C7 FE 03 B6 -- 008FD0
3D 83 B5 86 3E C5 2E 00 00 02 C8 57 56 CB 5E 5F -- 008FE0
97 1E 9A B8 30 36 FF 2E B8 32 36 FF 2E 12 7E 00 -- 008FF0
FF 02 75 FF B6 1A 3E C5 2E 04 C4 83 00 5C 01 FE -- 009000
36 FF 2E 50 00 01 B8 04 C4 83 00 64 4E E3 9A 35 -- 009010
5A 36 FF 2E B6 5C 36 FF 2E B7 D8 36 FF 2E B7 DA -- 009020
86 3E C5 2E FE 46 89 0A C4 83 00 5C 94 FB 9A B6 -- 009030
B8 34 36 FF 2E B8 36 36 FF 2E 12 7E 00 3D 83 B5 -- 009040
00 3D 83 B5 86 3E C5 2E 04 C4 83 00 5C 97 1E 9A -- 009050
5C 97 1E 9A B8 38 36 FF 2E B8 3A 36 FF 2E 12 7E -- 009060
35 FF B8 40 3E C5 2E 50 FE 46 8D 16 04 C4 83 00 -- 009070
00 64 3D BA 9A 16 6A 02 6A 35 FF B8 3C 3E C5 2E -- 009080
3D 83 B5 86 3E C5 2E 37 74 00 FE 7E 83 0C C4 83 -- 009090
B8 44 36 FF 2E B8 46 36 FF 2E FE 76 FF 15 7E 00 -- 0090A0
00 6A 00 6A 00 6A 00 6A 06 C4 83 00 5C 97 1E 9A -- 0090B0
6E EB FF FF B8 0A C4 83 00 64 28 52 9A FE 76 FF -- 0090C0
2E B8 4A 36 FF 2E 12 7E 00 3D 83 B5 86 3E C5 2E -- 0090D0
14 D7 A7 9A 04 C4 83 00 5C 97 1E 9A B8 48 36 FF -- 0090E0
83 B5 86 3E C5 2E 00 00 05 C7 B5 76 3E C5 2E 00 -- 0090F0

1E 9A B8 4C 36 FF 2E B8 4E 36 FF 2E 12 7E 00 3D -- 009100
00 64 23 6E 9A 00 54 46 BD 9A 04 C4 83 00 5C 97 -- 009110
2E B8 52 36 FF 2E 12 7E 00 3D 83 B5 86 3E C5 2E -- 009120
5F C9 C0 2B 04 C4 83 00 5C 97 1E 9A B8 50 36 FF -- 009130
00 3D 83 B5 86 3E C5 2E 00 00 0C C8 57 56 CB 5E -- 009140
FF 2E B8 56 36 FF 2E 35 FF B6 4E 3E C5 2E 19 7E -- 009150
00 00 FE 46 C7 06 C4 83 00 5C 97 1E 9A B8 54 36 -- 009160
50 00 BD E9 03 7C 05 3B FE 46 8B B6 4E 3E C5 2E -- 009170
B6 C8 1E 8E 2E B6 C6 3E 03 2E F8 8B 1E FE 46 6B -- 009180
08 75 FF B6 C6 3E 03 2E F8 8B 1E FE 46 6B 35 FF -- 009190
46 6B 06 75 FF B6 C6 3E 03 2E F8 8B 1E FE 46 6B -- 0091A0
1E FE 46 6B 04 75 FF B6 C6 3E 03 2E F8 8B 1E FE -- 0091B0
83 00 14 85 CD 9A 02 75 FF B6 C6 3E 03 2E F8 8B -- 0091C0
DF 2E 9B 59 7D 04 FC 7E 83 00 00 FC 46 C7 0C C4 -- 0091D0
FC 46 6B 02 E6 C1 FE 76 8B F4 5E DD 9B B8 5C 06 -- 0091E0
9B FE 03 B8 5A 1E 8E 2E B8 58 3E 03 2E F8 8B 30 -- 0091F0
ED F9 9A 00 5C ED 99 9A F4 4E DC 9B 05 D9 01 FE -- 009200
B6 1A 36 03 2E 02 E6 C1 FE 76 8B 08 C4 83 00 5C -- 009210
5C 8E 26 3C 03 26 E7 D1 FC 7E 8B B6 1C 06 8E 2E -- 009220
C5 2E FF 34 E9 FE 46 FF A1 EB FC 46 FF 05 89 02 -- 009230
36 FF 2E B8 60 36 FF 2E 12 7E 00 3D 83 B5 86 3E -- 009240
5E 5F C9 9B C0 2B 04 C4 83 00 5C 97 1E 9A B8 5E -- 009250
4B EC 46 C7 00 32 EA 46 C7 00 00 4A C8 57 56 CB -- 009260
00 FA F2 46 C7 00 C8 F0 46 C7 00 64 EE 46 C7 00 -- 009270
C7 03 20 F8 46 C7 01 90 F6 46 C7 01 2C F4 46 C7 -- 009280
2E 9B E2 5E DD 9B B8 62 06 DD 2E 9B 05 DC FA 46 -- 009290
DC 9B B8 6A 06 DD 2E 9B CE 5E DD 9B B8 72 06 DF -- 0092A0
B5 86 3E C5 2E 7F FF C2 46 C7 D6 5E DD 9B CE 76 -- 0092B0
9A B8 74 36 FF 2E B8 76 36 FF 2E 12 7E 00 3D 83 -- 0092C0
16 FD 03 E7 D1 4F 12 7E 8B 04 C4 83 00 5C 97 1E -- 0092D0
9B FC 4E DE 9B FC 46 DF 9B FC 46 89 EA 45 8B 1F -- 0092E0
64 5C 36 9A 00 5C ED 99 9A E2 46 DD 9B B6 5E DD -- 0092F0
99 FC 46 8B DE 5E D9 9B B6 76 DC 9B 08 C4 83 00 -- 009300
CC 46 89 08 C4 83 00 5C EE DC 9A 50 52 99 50 52 -- 009310
8B 0A 46 89 08 E8 C1 0A 66 F7 10 46 8B CE 56 89 -- 009320
66 F7 10 46 8B 0C 46 89 08 E8 C1 0C 66 F7 10 46 -- 009330
0A 46 8B D4 46 89 0C 46 8B 0E 46 89 08 E8 C1 0E -- 009340
D1 0E 46 2B 0C 46 8B D2 46 89 02 E0 C1 0C 46 2B -- 009350
76 FF 4D 7E 00 3D 83 B5 86 3E C5 2E D0 46 89 E0 -- 009360
36 FF 2E 12 76 FF FC 76 FF 0A 76 FF 0C 76 FF 0E -- 009370
```

50

```
2E  0E  C4  83  00  5C  97  1E  9A  B8  78  36  FF  2E  B8  7A  --  009380
00  68  01  FF  68  20  7E  00  01  3D  05  8B  B5  86  3E  C5  --  009390
FF  2E  B8  7E  36  FF  2E  14  76  FF  00  6A  00  FF  68  01  --  0093A0
D4  46  2B  C0  2B  0E  C4  83  00  5C  97  1E  9A  B8  7C  36  --  0093B0
8E  2E  B6  1A  3E  03  2E  02  E7  C1  14  7E  8B  FE  46  89  --  0093C0
56  89  BE  46  89  00  10  05  02  55  8B  05  8B  B6  1C  1E  --  0093D0
99  FE  46  8B  70  7C  FE  46  3B  D4  46  2B  00  FF  B8  C0  --  0093E0
C8  46  89  08  C4  83  00  5C  EE  DC  9A  50  52  99  50  52  --  0093F0
73  CC  46  3B  42  7F  07  7C  CE  56  3B  CA  56  89  01  FE  --  009400
46  D9  9B  C4  5E  D9  9B  C8  4E  DA  9B  DE  46  D9  9B  3D  --  009410
D9  9B  08  C4  83  00  64  5B  E6  9A  00  5C  ED  99  9A  C4  --  009420
9A  00  5C  ED  99  9A  C2  4E  DE  9B  C4  46  D9  9B  C4  5E  --  009430
7E  C5  07  EB  05  89  BE  7E  C5  08  C4  83  00  5C  ED  F9  --  009440
04  B8  85  EB  02  BE  46  83  FE  46  FF  00  00  05  C7  BE  --  009450
3E  03  2E  02  E7  C1  14  7E  8B  FE  46  89  D2  46  2B  FC  --  009460
89  02  10  05  02  55  8B  05  8B  B6  1C  1E  8E  2E  B6  1A  --  009470
71  7C  FE  46  3B  D2  46  2B  03  FC  B8  C0  56  89  BE  46  --  009480
C4  83  00  5C  EE  DC  9A  50  52  99  50  52  99  FE  46  8B  --  009490

46  3B  42  7F  07  7C  CE  56  3B  CA  56  89  C8  46  89  08  --  0094A0
9B  C4  5E  D9  9B  C8  4E  DA  9B  DE  46  D9  9B  3D  73  CC  --  0094B0
08  C4  83  00  64  5B  E6  9A  00  5C  ED  99  9A  C4  46  D9  --  0094C0
5C  ED  99  9A  C2  4E  DE  9B  C4  46  D9  9B  C4  5E  D9  9B  --  0094D0
07  EB  05  89  BE  7E  C5  08  C4  83  00  5C  ED  F9  9A  00  --  0094E0
EB  02  BE  46  83  04  FE  46  83  00  00  05  C7  BE  7E  C5  --  0094F0
02  E7  C1  14  7E  8B  FE  46  89  D0  46  2B  FE  02  B8  84  --  009500
05  02  55  8B  05  8B  B6  1C  1E  8E  2E  B6  1A  3E  03  2E  --  009510
46  3B  D0  46  2B  01  FE  B8  C0  56  89  BE  46  89  06  0E  --  009520
5C  EE  DC  9A  50  52  99  50  52  99  FE  46  8B  71  7C  FE  --  009530
7F  07  7C  CE  56  3B  CA  56  89  C8  46  89  08  C4  83  00  --  009540
D9  9B  C8  4E  DA  9B  DE  46  D9  9B  3D  73  CC  46  3B  42  --  009550
00  64  5B  E6  9A  00  5C  ED  99  9A  C4  46  D9  9B  C4  5E  --  009560
9A  C2  4E  DE  9B  C4  46  D9  9B  C4  5E  D9  9B  08  C4  83  --  009570
89  BE  7E  C5  08  C4  83  00  5C  ED  F9  9A  00  5C  ED  99  --  009580
46  83  02  FE  46  83  00  00  05  C7  BE  7E  C5  07  EB  05  --  009590
FF  2E  12  7E  00  3D  83  B5  86  3E  C5  2E  84  EB  02  BE  --  0095A0
04  C4  83  00  5C  97  1E  9A  B8  80  36  FF  2E  B8  82  36  --  0095B0
3E  C5  2E  00  04  16  C8  57  56  CB  5E  5F  C9  9B  C0  2B  --  0095C0
FF  2E  35  FF  B6  4E  3E  C5  2E  19  7E  00  3D  83  B5  86  --  0095D0
06  C4  83  00  5C  97  1E  9A  B8  84  36  FF  2E  B8  86  36  --  0095E0
46  C7  02  45  E9  03  7C  04  FA  7E  83  00  00  FA  46  C7  --  0095F0
7C  05  3B  FE  46  8B  B6  4E  3E  C5  2E  00  00  FE  01  FE  --  009600
2E  E7  D1  FA  7E  8B  F0  8B  1E  FE  46  6B  00  91  E9  03  --  009610
8B  0A  45  DF  9B  FE  03  B6  C8  1E  8E  2E  B6  C6  3E  03  --  009620
B8  88  3E  03  2E  F8  8B  30  FA  46  6B  02  E6  C1  FE  76  --  009630
2E  00  00  FC  46  C7  1D  D9  9B  FE  03  B8  8A  1E  8E  2E  --  009640
E0  D1  FA  46  8B  44  7D  05  3B  FC  46  8B  B6  4E  3E  C5  --  009650
03  2E  03  E7  C1  FE  7E  8B  F0  8B  60  FC  46  6B  C8  8B  --  009660
8B  05  DF  9B  F9  03  FE  03  B8  8E  1E  8E  2E  B8  8C  3E  --  009670
16  FD  8B  06  E6  C1  FE  76  8B  C8  8B  02  E0  C1  FC  46  --  009680
FF  B0  EB  FC  46  FF  FB  FA  9D  D9  9B  F9  03  FE  03  1F  --  009690
B8  90  06  03  2E  02  E0  C1  FA  46  8B  FF  60  E9  FE  46  --  0096A0
B8  58  06  03  2E  30  FA  46  6B  50  52  B8  92  16  8B  2E  --  0096B0
46  6B  35  FF  B6  4E  3E  C5  2E  50  52  B8  5A  16  8B  2E  --  0096C0
8D  16  50  52  B8  8A  16  8B  2E  B8  88  06  03  2E  30  FA  --  0096D0
C1  FA  7E  8B  12  C4  83  00  5C  89  22  9A  50  FB  FA  86  --  0096E0
9B  05  D9  9B  B8  92  1E  8E  2E  B8  90  3E  03  2E  02  E7  --  0096F0
C1  FA  7E  8B  57  73  00  5C  ED  94  9A  B8  94  1E  DC  2E  --  009700
9B  05  D9  9B  B8  92  1E  8E  2E  B8  90  3E  03  2E  02  E7  --  009710
86  3E  C5  2E  37  76  00  5C  ED  94  9A  B8  9C  1E  DC  2E  --  009720
```

51

```
FF  2E  B8  A6  36  FF  2E  FA  76  FF  15  7E  00  3D  83  B5  --  009730
6A  00  6A  00  6A  06  C4  83  00  5C  97  1E  9A  B8  A4  36  --  009740
C0  2B  0A  C4  83  00  64  28  52  9A  16  02  68  00  6A  00  --  009750
FC  46  8B  B6  4E  3E  C5  2E  00  00  FC  46  C7  01  01  E9  --  009760
FA  46  6B  02  E6  C1  FC  76  8B  00  C8  E9  03  7C  05  3B  --  009770
9B  FE  03  B8  5A  1E  8E  2E  B8  58  3E  03  2E  F8  8B  30  --  009780
AA  06  DF  2E  9B  1D  D9  9B  0D  D8  9B  B8  A8  06  DF  2E  --  009790
76  8B  FB  F2  9E  DD  9B  EE  D9  9B  FB  EA  9E  DD  9B  B8  --  0097A0
03  B8  58  3E  03  2E  F8  8B  30  FA  46  6B  02  E6  C1  FC  --  0097B0
1D  76  00  5C  ED  94  9A  FB  F2  9E  DC  9B  05  D9  9B  FE  --  0097C0
58  3E  03  2E  F8  8B  30  FA  46  6B  02  E6  C1  FC  76  8B  --  0097D0
FC  76  8B  1E  EB  05  D9  9B  FE  03  B8  5A  1E  8E  2E  B8  --  0097E0
8E  2E  B8  58  3E  03  2E  F8  8B  30  FA  46  6B  02  E6  C1  --  0097F0
9E  DC  9B  E0  D9  9B  05  D9  9B  FE  03  B8  5A  1E  01  FE  --  009800
3D  83  B5  86  3E  C5  2E  22  76  00  5C  ED  94  9A  FB  EA  --  009810
B8  AC  36  FF  2E  B8  AE  36  FF  2E  FF  27  E9  03  7F  00  --  009820
29  E9  FC  46  FF  FF  12  E9  04  C4  83  00  5C  97  1E  9A  --  009830

7E  00  3D  83  B5  86  3E  C5  2E  FD  B2  E9  FA  46  FF  FF  --  009840
00  5C  97  1E  9A  B8  B0  36  FF  2E  B8  B2  36  FF  2E  12  --  009850
00  0C  C8  57  56  CB  5E  5F  C9  9B  00  01  B8  04  C4  83  --  009860
B6  4E  3E  C5  2E  19  7E  00  3D  83  B5  86  3E  C5  2E  00  --  009870
5C  97  1E  9A  B8  B4  36  FF  2E  B8  B6  36  FF  2E  35  FF  --  009880
46  8B  B6  4E  3E  C5  2E  00  00  FE  46  C7  06  C4  83  00  --  009890
3E  C5  2E  00  00  FC  46  C7  01  FD  E9  03  7C  05  3B  FE  --  0098A0
1E  FC  46  6B  01  E3  E9  03  7C  05  3B  FC  46  8B  B6  4E  --  0098B0
89  02  45  8B  B6  C8  1E  8E  2E  B6  C6  3E  03  2E  F8  8B  --  0098C0
04  45  8B  B6  C6  3E  03  2E  F8  8B  1E  FC  46  6B  FA  46  --  0098D0
45  8B  B6  C6  3E  03  2E  F8  8B  1E  FC  46  6B  F8  46  89  --  0098E0
8B  B6  C6  3E  03  2E  F8  8B  1E  FC  46  6B  F6  46  89  06  --  0098F0
E9  03  7F  00  3D  83  B5  86  3E  C5  2E  F4  46  89  08  45  --  009900
1E  8E  2E  B6  C6  3E  03  2E  F8  8B  1E  FC  46  6B  00  91  --  009910
B6  C6  3E  03  2E  F8  8B  1E  FC  46  08  75  FF  B6  C8  --  009920
75  FF  B6  C6  3E  03  2E  F8  8B  1E  FC  46  6B  06  75  FF  --  009930
8B  02  75  FF  B6  C6  3E  03  2E  F8  8B  1E  FC  46  6B  04  --  009940
FF  B6  C6  3E  03  2E  F8  8B  1E  FE  46  6B  50  40  FC  46  --  009950
06  75  FF  B6  C6  3E  03  2E  F8  8B  1E  FE  46  6B  08  75  --  009960
46  6B  04  75  FF  B6  C6  3E  03  2E  F8  8B  1E  FE  46  6B  --  009970
40  FE  46  8B  02  75  FF  B6  C6  3E  03  2E  F8  8B  1E  FE  --  009980
00  5C  97  1E  9A  B8  B8  36  FF  2E  B8  BA  36  FF  2E  50  --  009990
8E  2E  B6  C6  3E  03  2E  F8  8B  1E  FE  46  6B  18  C4  83  --  0099A0
16  50  F6  46  8D  16  50  F4  46  8D  16  35  FF  B6  C8  1E  --  0099B0
2E  F8  8B  1E  FE  46  6B  50  FA  46  8D  16  50  F8  46  8D  --  0099C0
3E  03  2E  F8  8B  1E  FE  46  6B  08  75  FF  B6  C6  3E  03  --  0099D0
B6  C6  3E  03  2E  F8  8B  1E  FE  46  6B  06  75  FF  B6  C6  --  0099E0
75  FF  B6  C6  3E  03  2E  F8  8B  1E  FE  46  6B  04  75  FF  --  0099F0
B5  86  3E  C5  2E  1A  C4  83  00  14  8E  2D  9A  02  01  FE  --  009A00
76  FF  F8  76  FF  F6  76  FF  F4  76  FF  1E  7E  00  3D  83  --  009A10
00  5C  97  1E  9A  B8  BC  36  FF  2E  B8  BE  36  FF  2E  FA  --  009A20
2E  03  E7  C1  FC  7E  8B  F0  8B  60  FE  46  6B  0C  C4  83  --  009A30
05  89  FA  46  8B  FE  03  B8  8E  1E  8E  2E  B8  8C  3E  03  --  009A40
8C  3E  03  2E  03  E7  C1  FC  7E  8B  F0  8B  60  FE  46  6B  --  009A50
8B  F0  8B  60  FE  46  6B  02  45  89  F8  46  8B  FE  03  B8  --  009A60
89  F6  46  8B  FE  03  B8  8C  3E  03  2E  03  E7  C1  FC  7E  --  009A70
03  2E  03  E7  C1  FC  7E  8B  F0  8B  60  FE  46  6B  04  45  --  009A80
0E  E9  FC  46  FF  06  45  89  F4  46  8B  FE  03  B8  8C  3E  --  009A90
7E  00  3D  83  B5  86  3E  C5  2E  FD  F4  E9  FE  46  FF  FE  --  009AA0
00  5C  97  1E  9A  B8  C0  36  FF  2E  B8  C2  36  FF  2E  12  --  009AB0
C7  00  00  60  C8  57  56  CB  5E  5F  C9  C0  2B  04  C4  83  --  009AC0
46  C7  00  64  F0  46  C7  00  4B  EE  46  C7  00  32  EC  46  --  009AD0
```

52

```
F8  46  C7  01  2C  F6  46  C7  00  FA  F4  46  C7  00  C8  F2  --  009AE0
06  DD  2E  9B  05  DC  FC  46  C7  03  20  FA  46  C7  01  90  --  009AF0
D0  5E  DD  9B  B8  72  06  DF  2E  9B  E4  5E  DD  9B  B8  62  --  009B00
C5  2E  D8  5E  DD  9B  D0  76  DC  9B  B8  6A  06  DD  2E  9B  --  009B10
2E  B8  C6  36  FF  2E  12  7E  00  01  3D  05  8B  B5  86  3E  --  009B20
4F  22  7E  8B  04  C4  83  00  5C  97  1E  9A  B8  C4  36  FF  --  009B30
FE  46  DF  9B  FE  46  89  EC  45  8B  1F  16  FD  03  E7  D1  --  009B40
5C  ED  99  9A  E4  46  DD  9B  A0  5E  DD  9B  FE  4E  DE  9B  --  009B50
5E  D9  9B  A0  76  DC  9B  08  C4  83  00  64  5C  36  9A  00  --  009B60
83  00  5C  EE  DC  9A  50  52  99  50  52  99  FE  46  8B  E0  --  009B70
E8  C1  0A  66  F7  10  46  8B  D0  56  89  CE  46  89  08  C4  --  009B80
0C  46  89  08  E8  C1  0C  66  F7  10  46  8B  0A  46  89  08  --  009B90
89  0C  46  8B  0E  46  89  08  E8  C1  0E  66  F7  10  46  8B  --  009BA0
46  8B  D4  46  89  02  E0  C1  0C  46  2B  0A  46  8B  D6  46  --  009BB0
46  89  05  8B  12  7E  C5  D2  46  89  E0  D1  0E  46  2B  0C  --  009BC0
46  89  05  8B  1A  7E  C5  B6  46  89  05  8B  16  7E  C5  B8  --  009BD0

89  08  E8  C1  B8  66  F7  B2  46  89  05  8B  1E  7E  C5  B4  --  009BE0
46  8B  AE  46  89  08  E8  C1  B6  66  F7  B2  46  8B  B0  46  --  009BF0
86  3E  C5  2E  AC  46  89  08  E8  C1  B4  66  F7  B2  01  FE  --  009C00
36  FF  2E  B8  CA  36  FF  2E  36  7E  00  01  3D  05  8B  B5  --  009C10
B4  76  FF  B2  76  FF  04  C4  83  00  5C  97  1E  9A  B8  C8  --  009C20
CE  36  FF  2E  22  76  FF  FE  76  FF  B8  76  FF  B6  76  FF  --  009C30
7E  8B  10  C4  83  00  5C  97  1E  9A  B8  CC  36  FF  2E  B8  --  009C40
8B  D6  7E  2B  AE  7E  8B  50  52  99  C7  8B  D6  7E  2B  AE  --  009C50
89  CA  46  89  08  C4  83  00  5C  EE  DC  9A  50  52  99  C7  --  009C60
D9  9B  1F  73  CE  46  3B  24  7F  07  7C  D0  56  3B  CC  56  --  009C70
99  9A  C6  46  D9  9B  C6  5E  D9  9B  CA  4E  DA  9B  E0  46  --  009C80
EE  D9  9B  03  EB  08  C4  83  00  64  5B  E6  9A  00  5C  ED  --  009C90
D4  7E  2B  02  E7  C1  AE  7E  2B  B0  7E  8B  C2  5E  D9  9B  --  009CA0
7E  2B  02  E7  C1  AE  7E  2B  B0  7E  8B  50  52  99  C7  8B  --  009CB0
46  89  08  C4  83  00  5C  EE  DC  9A  50  52  99  C7  8B  D4  --  009CC0
1F  73  CE  46  3B  24  7F  07  7C  D0  56  3B  CC  56  89  CA  --  009CD0
C6  46  D9  9B  C6  5E  D9  9B  CA  4E  DA  9B  E0  46  D9  9B  --  009CE0
9B  03  EB  08  C4  83  00  64  5B  E6  9A  00  5C  ED  99  9A  --  009CF0
7E  2B  E7  D1  AC  7E  2B  AE  7E  8B  BE  5E  D9  9B  EE  D9  --  009D00
7E  2B  E7  D1  AC  7E  2B  AE  7E  8B  50  52  99  C7  8B  D2  --  009D10
46  89  08  C4  83  00  5C  EE  DC  9A  50  52  99  C7  8B  D2  --  009D20
1F  73  CE  46  3B  24  7F  07  7C  D0  56  3B  CC  56  89  CA  --  009D30
C6  46  D9  9B  C6  5E  D9  9B  CA  4E  DA  9B  E0  46  D9  9B  --  009D40
9B  03  EB  08  C4  83  00  64  5B  E6  9A  00  5C  ED  99  9A  --  009D50
D8  9B  BE  4E  D8  9B  C2  46  D9  9B  BA  5E  D9  9B  EE  D9  --  009D60
DD  9B  EE  D9  9B  00  64  AA  46  C7  C6  5E  D9  9B  BA  4E  --  009D70
74  00  5C  ED  94  9A  A0  5E  DC  9B  C6  46  D9  9B  A0  5E  --  009D80
F9  9A  00  5C  ED  99  9A  AA  4E  DE  9B  C6  46  D9  9B  37  --  009D90
46  8B  05  89  12  7E  C5  A8  46  89  08  C4  83  00  5C  ED  --  009DA0
46  8B  05  89  1A  7E  C5  A8  46  8B  05  89  16  7E  C5  A8  --  009DB0
C5  00  00  05  C7  12  7E  C5  1C  EB  05  89  1E  7E  C5  A8  --  009DC0
1E  7E  C5  00  00  05  C7  1A  7E  C5  00  00  05  C7  16  7E  --  009DD0
12  7E  00  01  3D  05  8B  B5  86  3E  C5  2E  00  00  05  C7  --  009DE0
83  00  5C  97  1E  9A  B8  D0  36  FF  2E  B8  D2  36  FF  2E  --  009DF0
00  2C  C8  57  56  CB  5E  5F  C9  9B  C0  2B  04  C4  01  FE  --  009E00
00  10  DA  46  C7  00  00  DC  46  C7  00  00  E0  46  C7  00  --  009E10
2E  12  7E  00  3D  83  B5  86  3E  C5  2E  30  30  D8  46  C7  --  009E20
C4  83  00  5C  97  1E  9A  B8  D4  36  FF  2E  B8  D6  36  FF  --  009E30
00  01  F6  46  C7  00  12  F4  46  C7  00  0D  F2  46  C7  04  --  009E40
64  4E  A1  9A  01  6A  09  6A  01  F9  46  C6  02  F8  46  C6  --  009E50
C5  2E  3A  75  C2  0B  FD  56  89  FB  46  89  04  C4  83  00  --  009E60
36  FF  2E  B8  DA  36  FF  2E  12  7E  00  3D  83  B5  86  3E  --  009E70
6A  10  20  E0  46  C7  04  C4  83  00  5C  97  1E  9A  B8  D8  --  009E80
```

53

```
83 00 64 28 52 9A E0 76 FF 00 6A 00 6A 00 6A 00 -- 009E90
45 C7 25 05 C6 FB 7E C5 02 02 E9 FF FF B8 0A C4 -- 009EA0
07 45 C7 00 00 05 45 C7 00 0C 03 45 C7 00 00 01 -- 009EB0
DE 36 FF 2E 12 7E 00 3D 83 B5 86 3E C5 2E 00 11 -- 009EC0
8D 16 04 C4 83 00 5C 97 1E 9A B8 DC 36 FF 2E B8 -- 009ED0
36 FF 2E B8 42 36 FF 2E 50 F2 46 8D 16 50 E0 46 -- 009EE0
08 6A 06 6A 35 FF B8 3C 3E C5 2E DA 76 FF B8 40 -- 009EF0
C5 2E 25 74 00 E0 7E 83 14 C4 83 00 64 3D BA 9A -- 009F00
FF 2E E0 76 FF FF 74 E9 03 7F 00 3D 83 B5 86 3E -- 009F10
06 C4 83 00 5C 97 1E 9A B8 E0 36 FF 2E B8 E2 36 -- 009F20
36 FF 2E 12 7E 00 3D 83 B5 86 3E C5 2E FF 5C E9 -- 009F30
C7 04 C4 83 00 5C 97 1E 9A B8 E4 36 FF 2E B8 E6 -- 009F40
DE 7E 8B 01 2F E9 03 7C 0C DE 7E 83 00 00 DE 46 -- 009F50
89 DE 46 8B B8 EA 1E 8E 2E B8 E8 3E 03 2E E7 D1 -- 009F60
46 89 40 05 8B B8 E8 3E 03 2E E7 D1 DE 7E 8B 05 -- 009F70

B8 E8 06 03 2E E0 D1 DE 46 8B 50 E0 46 8D 16 D4 -- 009F80
FF B8 40 3E C5 2E DC 76 FF 50 52 B8 EA 16 8B 2E -- 009F90
64 3D BA 9A 02 6A 05 6A 35 FF B8 3C 3E C5 2E 35 -- 009FA0
83 B5 86 3E C5 2E 1D 74 00 E0 7E 83 12 C4 83 00 -- 009FB0
2E B8 EE 36 FF 2E E0 76 FF FE C8 E9 03 7F 00 3D -- 009FC0
00 03 E5 46 C7 70 E2 46 C6 FF 51 E9 B8 EC 36 FF -- 009FD0
01 E9 46 C6 02 E7 46 C6 01 E8 46 C6 01 EB 46 C6 -- 009FE0
D8 46 8B 00 02 E3 46 C7 01 EC 46 C6 04 EA 46 C6 -- 009FF0
46 89 5A 16 D6 46 8D D6 46 89 40 DE 46 03 01 FE -- 00A000
25 6A 50 E2 46 8D 16 50 E0 46 8D 16 EF 56 89 ED -- 00A010
FF B8 EA 1E 8E 2E B8 E8 3E 03 2E E7 D1 DE 7E 8B -- 00A020
64 3D BA 9A 03 6A 05 6A 35 FF B8 3C 3E C5 2E 35 -- 00A030
83 B5 86 3E C5 2E 1D 74 00 E0 7E 83 12 C4 83 00 -- 00A040
2E B8 F2 36 FF 2E E0 76 FF FE 3A E9 03 7F 00 3D -- 00A050
7E 00 3D 83 B5 86 3E C5 2E FE C3 E9 B8 F0 36 FF -- 00A060
B8 F4 36 FF 2E B8 F6 36 FF 2E 50 40 DE 46 8B 17 -- 00A070
C5 2E FE C8 E9 DE 46 FF 06 C4 83 00 5C 97 1E 9A -- 00A080
36 FF 2E B8 FA 36 FF 2E 12 7E 00 3D 83 B5 86 3E -- 00A090
CB 5E 5F C9 C0 2B 04 C4 83 00 5C 97 1E 9A B8 F8 -- 00A0A0
15 7E 00 3D 83 B5 86 3E C5 2E 00 00 06 C8 57 56 -- 00A0B0
97 1E 9A B8 FC 36 FF 2E B8 FE 36 FF 2E 0A 76 FF -- 00A0C0
83 B6 36 3E C5 2E 00 54 46 BD 9A 06 C4 83 00 5C -- 00A0D0
FF 2E 12 7E 00 3D 83 B5 86 3E C5 2E 22 75 00 3D -- 00A0E0
04 C4 83 00 5C 97 1E 9A B9 00 36 FF 2E B9 02 36 -- 00A0F0
FE 46 C7 FC 46 89 48 0A 46 8B 01 13 E9 00 01 B8 -- 00A100
CB E9 03 7C 05 3B FE 46 8B B6 4E 3E C5 2E 00 00 -- 00A110
C8 1E 8E 2E B6 C6 3E 03 2E F8 8B 1E FE 46 6B 00 -- 00A120
3B FE 46 8B 00 AA E9 03 74 00 01 3D 1A 45 8B B6 -- 00A130
D1 FE 7E 8B 50 FA 46 8D 16 00 9F E9 03 75 FC 46 -- 00A140
3E C5 2E 35 FF B8 EA 1E 8E 2E B8 E8 3E 03 2E E7 -- 00A150
0C C4 83 00 64 3D BA 9A 07 6A 02 6A 35 FF B8 3C -- 00A160
18 7E 00 3D 83 B5 86 3E C5 2E 3A 74 00 FA 7E 83 -- 00A170
B9 04 36 FF 2E B9 06 36 FF 2E FA 76 FF FE 76 FF -- 00A180
00 6A 00 6A 00 6A 00 6A 08 C4 83 00 5C 97 1E 9A -- 00A190
69 EB FF FF B8 0A C4 83 00 64 28 52 9A FA 76 FF -- 00A1A0
B6 C8 1E 8E 2E B6 C6 3E 03 2E F8 8B 1E FE 46 6B -- 00A1B0
8B 17 7E 00 3D 83 B5 86 3E C5 2E 00 00 1A 45 C7 -- 00A1C0
1E 9A B9 08 36 FF 2E B9 0A 36 FF 2E 50 40 FE 46 -- 00A1D0
00 0A 7E 83 FF 26 E9 FE 46 FF 06 C4 83 00 5C 97 -- 00A1E0
B5 86 3E C5 2E 00 00 05 C7 B6 36 3E C5 2E 09 7D -- 00A1F0
0C 36 FF 2E B9 0E 36 FF 2E 12 7E 00 3D 83 01 FE -- 00A200
56 CB 5E 5F C9 C0 2B 04 C4 83 00 5C 97 1E 9A B9 -- 00A210
2E 19 7E 00 3D 83 B5 86 3E C5 2E 00 00 4A C8 57 -- 00A220
B9 10 36 FF 2E B9 12 36 FF 2E 35 FF B6 4E 3E C5 -- 00A230
```

54

```
3E C5 2E 00 34 D9 7E 9A 06 C4 83 00 5C 97 1E 9A -- 00A240
14 36 FF 2E B9 16 36 FF 2E 12 7E 00 3D 83 B5 86 -- 00A250
C5 2E 00 44 57 40 9A 04 C4 83 00 5C 97 1E 9A B9 -- 00A260
36 FF 2E B9 1A 36 FF 2E 12 7E 00 3D 83 B5 86 3E -- 00A270
2E 00 54 46 A1 9A 04 C4 83 00 5C 97 1E 9A B9 18 -- 00A280
D9 9B B9 2C 3E C5 2E 46 7E 00 3D 83 B5 86 3E C5 -- 00A290
99 9A 05 D9 9B B9 28 3E C5 2E 00 5C ED 99 9A 05 -- 00A2A0
00 5C ED 99 9A 05 D9 9B B9 24 3E C5 2E 00 5C ED -- 00A2B0
36 FF 2E 00 5C ED 99 9A 05 D9 9B B9 20 3E C5 2E -- 00A2C0
8B 24 C4 83 00 5C 97 1E 9A B9 1C 36 FF 2E B9 1E -- 00A2D0
B6 4E 3E C5 2E 00 00 FE 46 C7 FC 46 89 48 0A 46 -- 00A2E0
08 7C 00 0A 7E 83 01 D0 E9 03 7E 05 3B FE 46 8B -- 00A2F0
03 2E F8 8B 1E FE 46 6B 01 BC E9 03 74 FC 46 3B -- 00A300
A3 E9 03 75 00 1C 7D 83 B6 C8 1E 8E 2E B6 C6 3E -- 00A310

2E B6 C6 06 03 2E 1E FE 46 6B 50 E6 46 8D 16 01 -- 00A320
9A 50 00 12 05 C3 8B 51 CA 8B D8 8B B6 C8 16 8B -- 00A330
34 ED BA 9A 50 D6 46 8D 16 08 C4 83 00 34 EF 50 -- 00A340
DD 9B B9 30 06 DC 2E 9B D6 46 D9 9B 04 C4 83 00 -- 00A350
77 00 5C ED 94 9A CE 5E DC 9B E6 46 D9 9B CE 5E -- 00A360
DD 9B B9 30 06 DC 2E 9B DE 46 D9 9B 01 50 E9 03 -- 00A370
77 00 5C ED 94 9A C6 5E DC 9B EA 46 D9 9B C6 5E -- 00A380
DD 9B B9 30 26 DC 2E 9B DA 46 D9 9B 01 30 E9 03 -- 00A390
72 00 5C ED 94 9A BE 5E DC 9B E6 46 D9 9B BE 5E -- 00A3A0
DD 9B B9 30 26 DC 2E 9B E2 46 D9 9B 01 10 E9 03 -- 00A3B0
72 00 5C ED 94 9A B6 5E DC 9B EA 46 D9 9B B6 5E -- 00A3C0
EE 14 9A 00 5C ED 99 9A E6 46 D9 9B 00 F0 E9 03 -- 00A3D0
5C ED 99 9A EA 46 D9 9B EE 46 89 08 C4 83 00 5C -- 00A3E0
86 3E C5 2E F0 46 89 08 C4 83 00 5C EE 14 9A 00 -- 00A3F0
5C ED 99 9A EA 46 D9 9B 29 7E 00 3D 83 B5 01 FE -- 00A400
2E 50 40 FE 46 8B 00 5C ED 99 9A E6 46 D9 9B 00 -- 00A410
C4 83 00 5C 97 1E 9A B9 38 36 FF 2E B9 3A 36 FF -- 00A420
F8 8B 1E FE 46 6B 00 01 05 C7 B6 36 3E C5 2E 16 -- 00A430
16 00 01 1A 45 C7 B6 C8 1E 8E 2E B6 C6 3E 03 2E -- 00A440
FE 7E 8B 50 50 C0 2B 50 EE 46 8D 16 50 FA 46 8D -- 00A450
C5 2E 35 FF B8 EA 1E 8E 2E B8 E8 3E 03 2E E7 D1 -- 00A460
C4 83 00 64 3D BA 9A 06 6A 06 6A 35 FF B8 3C 3E -- 00A470
7E 00 3D 83 B5 86 3E C5 2E 3F 74 00 FA 7E 83 14 -- 00A480
3C 36 FF 2E B9 3E 36 FF 2E FA 76 FF FE 76 FF 18 -- 00A490
6A 00 6A 00 6A 00 6A 08 C4 83 00 5C 97 1E 9A B9 -- 00A4A0
34 DA 22 9A 0A C4 83 00 64 28 52 9A FA 76 FF 00 -- 00A4B0
86 3E C5 2E FE 21 E9 FE 46 FF 29 EB FF FF B8 00 -- 00A4C0
B9 40 36 FF 2E B9 42 36 FF 2E 12 7E 00 3D 83 B5 -- 00A4D0
9B C0 2B 00 34 DA 22 9A 04 C4 83 00 5C 97 1E 9A -- 00A4E0
83 B5 86 3E C5 2E 00 00 02 C8 57 56 CB 5E 5F C9 -- 00A4F0
3E 03 2E F8 8B 1E C7 6B 4F 0A 7E 8B 30 7E 00 3D -- 00A500
FF 50 48 0A 46 8B 1C 75 FF B6 C8 1E 8E 2E B6 C6 -- 00A510
5C 97 1E 9A B9 44 36 FF 2E B9 46 36 FF 2E 0A 76 -- 00A520
3E 03 2E F8 8B 1E C7 6B 4F 0A 7E 8B 0A C4 83 00 -- 00A530
01 A0 E9 03 75 00 1C 7D 83 B6 C8 1E 8E 2E B6 C6 -- 00A540
4E 8B 01 D4 E9 03 7C 04 FE 7E 83 00 00 FE 46 C7 -- 00A550
C6 3E 03 2E E7 D1 FE 7E 8B F0 8B 1E C1 6B 49 0A -- 00A560
08 7E 00 FF 3D 02 45 8B FE 03 B6 C8 1E 8E 2E B6 -- 00A570
8B 1E C1 6B 49 0A 4E 8B 1E EB B8 AA 06 DF 2E 9B -- 00A580
B6 C8 1E 8E 2E B6 C6 3E 03 2E E7 D1 FE 7E 8B F0 -- 00A590
38 3E 03 2E 02 E7 C1 FE 7E 8B 02 45 DF 9B FE 03 -- 00A5A0
2E 02 E6 C1 FE 76 8B 1D D9 9B B7 3A 1E 8E 2E B7 -- 00A5B0
1C D8 26 9B EE D9 9B B7 3A 06 8E 2E B7 38 36 03 -- 00A5C0
C1 FE 7E 8B 13 EB EE D9 9B 05 76 00 5C ED 94 9A -- 00A5D0
8B 05 D9 9B B7 3A 1E 8E 2E B7 38 3E 03 2E 02 E7 -- 00A5E0
```

```
9B B7 3A 1E 8E 2E B7 38 3E 03 2E 02 E7 C1 FE 7E -- 00A5F0
FE 5E 8B F0 8B 1E C1 6B 49 0A 4E 8B 1D D9 01 FE -- 00A600
4E 8B DE 03 B6 C8 06 8E 2E B6 C6 1E 03 2E E3 D1 -- 00A610
C6 3E 03 2E E7 D1 FE 7E 8B F0 8B 1E C1 6B 49 0A -- 00A620
3D 0A 47 03 26 02 45 8B FE 03 B6 C8 1E 8E 2E B6 -- 00A630
49 0A 4E 8B 44 EB B8 AA 06 DF 2E 9B 08 7E 00 FF -- 00A640
2E B6 C6 1E 03 2E E3 D1 FE 5E 8B F0 8B 1E C1 6B -- 00A650
8B F0 8B 1E C1 6B 49 0A 4E 8B DE 03 B6 C8 06 8E -- 00A660
FE 03 B6 C8 1E 8E 2E B6 C6 3E 03 2E E7 D1 FE 7E -- 00A670
02 C4 83 00 5C ED A7 9A 50 0A 47 03 26 02 45 8B -- 00A680
B6 FE 1E 8E 2E B6 FC 3E 03 2E 02 E7 C1 FE 7E 8B -- 00A690
8E 2E B6 FC 36 03 2E 02 E6 C1 FE 76 8B 1D D9 9B -- 00A6A0
76 00 5C ED 94 9A 1C D8 26 9B EE D9 9B B6 FE 06 -- 00A6B0

FC 3E 03 2E 02 E7 C1 FE 7E 8B 13 EB EE D9 9B 05 -- 00A6C0
2E 02 E7 C1 FE 7E 8B 05 D9 9B B6 FE 1E 8E 2E B6 -- 00A6D0
E9 FE 46 FF 1D D9 9B B6 FE 1E 8E 2E B6 FC 3E 03 -- 00A6E0
FE 7E 8B 37 7D 04 FE 7E 83 00 00 FE 46 C7 FE 65 -- 00A6F0
DF 2E 9B B7 3A 1E 8E 2E B7 38 3E 03 2E 02 E7 C1 -- 00A700
FC 3E 03 2E 02 E7 C1 FE 7E 8B 1D D9 9B B8 AA 06 -- 00A710
FF 1D D9 9B B8 AA 06 DF 2E 9B B6 FE 1E 8E 2E B6 -- 00A720
FF 2E 12 7E 00 3D 83 B5 86 3E C5 2E C3 EB FE 46 -- 00A730
04 C4 83 00 5C 97 1E 9A B9 48 36 FF 2E B9 4A 36 -- 00A740
2E 12 7E 00 3D 83 B5 86 3E C5 2E 00 14 CF 56 9A -- 00A750
C4 83 00 5C 97 1E 9A B9 4C 36 FF 2E B9 4E 36 FF -- 00A760
C5 2E 00 00 08 C8 57 56 CB 5E 5F C9 9B C0 2B 04 -- 00A770
7E 00 3D 83 B5 86 3E C5 2E 00 00 05 C7 B6 BA 3E -- 00A780
2E 35 FF B6 2E 3E C5 2E 35 FF B6 4E 3E C5 2E 27 -- 00A790
B9 50 36 FF 2E B9 52 36 FF 2E 35 FF B6 BA 3E C5 -- 00A7A0
83 00 14 94 0E 9A FF 6A 0A C4 83 00 5C 97 1E 9A -- 00A7B0
A3 E9 03 74 00 03 3D 05 8B B6 7A 3E C5 2E 02 C4 -- 00A7C0
9B 0C 45 D9 9B B6 FC 3E C5 2E B7 38 36 C4 2E 00 -- 00A7D0
1E DC 2E 9B F8 46 D9 9B F8 5E D9 9B 0C 64 D8 26 -- 00A7E0
DC 2E 9B F8 46 D9 9B 11 77 00 5C ED 94 9A B9 54 -- 00A7F0
86 3E C5 2E 6A 73 00 5C ED 94 9A B9 5C 1E 01 FE -- 00A800
B9 64 36 FF 2E B9 66 36 FF 2E 12 7E 00 3D 83 B5 -- 00A810
6A 00 6A 16 01 FC 46 C7 04 C4 83 00 5C 97 1E 9A -- 00A820
0A C4 83 00 64 28 52 9A FC 76 FF 00 6A 00 6A 00 -- 00A830
E7 C1 FE 7E 8B 2B 7D 04 FE 7E 83 00 00 FE 46 C7 -- 00A840
7E 8B 05 D9 9B B7 3A 1E 8E 2E B7 38 3E 03 2E 02 -- 00A850
D9 9B B6 FE 1E 8E 2E B6 FC 3E 03 2E 02 E7 C1 FE -- 00A860
B6 2E 3E C5 2E 00 14 9D A5 9A CF EB FE 46 FF 1D -- 00A870
B5 86 3E C5 2E 00 00 05 C7 26 75 00 01 3D 05 8B -- 00A880
36 FF 2E B9 6A 36 FF 2E 00 AF E9 03 7F 00 3D 83 -- 00A890
3E C5 2E 00 9A E9 04 C4 83 00 5C 97 1E 9A B9 68 -- 00A8A0
7E 00 3D 83 B5 86 3E C5 2E 60 75 00 3D 83 B6 32 -- 00A8B0
00 5C 97 1E 9A B9 6C 36 FF 2E B9 6E 36 FF 2E 12 -- 00A8C0
83 00 14 82 71 9A 35 FF B6 C2 3E C5 2E 04 C4 83 -- 00A8D0
4E 3E C5 2E 19 7E 00 3D 83 B5 86 3E C5 2E 02 C4 -- 00A8E0
97 1E 9A B9 70 36 FF 2E B9 72 36 FF 2E 35 FF B6 -- 00A8F0
C2 3E C5 2E 0D FF B6 4E 3E C5 2E 06 C4 83 00 5C -- 00A900
BE 3E C5 2E 00 14 7C 2A 9A 30 EB 00 00 05 C7 B6 -- 00A910
36 C4 2E 0D FF B6 4E 3E C5 2E 21 75 00 3D 83 B6 -- 00A920
1E 8E 2E B6 C6 3E 03 2E F8 8B 1E 04 6B 26 B6 4E -- 00A930
7E 00 3D 83 B5 86 3E C5 2E 00 00 1C 45 C7 B6 C8 -- 00A940
00 5C 97 1E 9A B9 74 36 FF 2E B9 76 36 FF 2E 12 -- 00A950
00 00 02 C8 57 56 CB 5E 5F C9 9B C0 2B 04 C4 83 -- 00A960
FF B6 4E 3E C5 2E 1C 7E 00 3D 83 B5 86 3E C5 2E -- 00A970
1E 9A B9 78 36 FF 2E B9 7A 36 FF 2E 0A 76 FF 35 -- 00A980
05 3B 0A 46 8B B6 4E 3E C5 2E 08 C4 83 00 5C 97 -- 00A990
```

56

```
7D 05 3B FE 46 8B B6 4E 3E C5 2E FE 46 89 3C 74 -- 00A9A0
C8 16 8B 2E B6 C6 06 03 2E 1E FE 46 6B 1E 6A 2D -- 00A9B0
52 B6 C6 06 03 2E 1E C7 6B 4F FE 7E 8B 50 52 B6 -- 00A9C0
C5 2E C7 EB FE 46 FF 0A C4 83 00 5C ED 6E 9A 50 -- 00A9D0
36 FF 2E B9 7E 36 FF 2E 12 7E 00 3D 83 B5 86 3E -- 00A9E0
FF B6 4E 3E C5 2E 04 C4 83 00 5C 97 1E 9A B9 7C -- 00A9F0
B6 4E 3E C5 2E 02 C4 83 00 14 82 71 9A 35 01 FE -- 00AA00
B6 32 3E C5 2E 00 00 05 C7 B6 BE 3E C5 2E 0D FF -- 00AA10
C5 2E 1D 7E 00 3D 83 B5 86 3E C5 2E 00 01 05 C7 -- 00AA20
FF 2E B9 82 36 FF 2E 50 40 05 8B 35 FF B6 4E 3E -- 00AA30
5E 5F C9 C0 2B 08 C4 83 00 5C 97 1E 9A B9 80 36 -- 00AA40
7E 00 3D 83 B5 86 3E C5 2E 00 00 04 C8 57 56 CB -- 00AA50

36 FF 2E B9 86 36 FF 2E 35 FF B6 2E 3E C5 2E 19 -- 00AA60
C7 B6 32 3E C5 2E 06 C4 83 00 5C 97 1E 9A B9 84 -- 00AA70
3E C5 2E 19 7E 00 3D 83 B5 86 3E C5 2E 00 00 05 -- 00AA80
1E 9A B9 88 36 FF 2E B9 8A 36 FF 2E 35 FF B6 C2 -- 00AA90
C7 6B 4F 3C 8B B6 C2 36 C5 2E 06 C4 83 00 5C 97 -- 00AAA0
1C 7D 83 B6 C8 1E 8E 2E B6 C6 3E 03 2E F8 8B 1E -- 00AAB0
00 D0 E9 03 7F 00 3D 83 B5 86 3E C5 2E 21 75 00 -- 00AAC0
8C 36 FF 2E B9 8E 36 FF 2E 35 FF B6 32 3E C5 2E -- 00AAD0
46 8B B6 7A 3E C5 2E 00 00 FE 46 C7 00 B4 E9 B9 -- 00AAE0
49 0F 8B B6 C2 1E C5 2E 00 85 E9 03 7C 05 3B FE -- 00AAF0
2E B6 C6 36 03 2E E6 D1 FE 76 8B F8 8B 1E C1 6B -- 00AB00
FC 3E 03 2E 02 E7 C1 FE 7E 8B F7 03 B6 C8 06 8E -- 00AB10
9B B7 30 06 DC 2E 9B 05 D9 9B B6 FE 1E 8E 2E B6 -- 00AB20
C4 83 00 5C ED F9 9A 00 5C ED 99 9A 02 64 DE 26 -- 00AB30
C7 B6 32 3E C5 2E 09 74 00 FC 7E 83 FC 46 89 08 -- 00AB40
F0 8B 1E C1 6B 49 0D 8B B6 C2 3E C5 2E 00 01 05 -- 00AB50
03 B6 C8 1E 8E 2E B6 C6 3E 03 2E E7 D1 FE 7E 8B -- 00AB60
3E C5 2E FF 6C E9 FE 46 FF 0A 45 89 FC 46 8B FE -- 00AB70
FF 2E 35 FF B6 32 3E C5 2E 19 7E 00 3D 83 B5 86 -- 00AB80
06 C4 83 00 5C 97 1E 9A B9 90 36 FF 2E B9 92 36 -- 00AB90
06 C8 57 56 CB 5E 5F C9 9B 05 8B B6 32 3E C5 2E -- 00ABA0
7E 00 3D 83 B5 86 3E C5 2E 00 01 FA 46 C7 00 00 -- 00ABB0
00 5C 97 1E 9A B9 94 36 FF 2E B9 96 36 FF 2E 12 -- 00ABC0
ED F9 9A 00 5C ED 99 9A 00 5C CD 5D 9A 04 C4 83 -- 00ABD0
7E 83 06 7C 01 FC 7E 83 FC 46 89 08 C4 83 00 5C -- 00ABE0
FF 2E 12 7E 00 3D 83 B5 86 3E C5 2E 23 7E 09 FC -- 00ABF0
83 00 5C 97 1E 9A B9 98 36 FF 2E B9 9A 36 01 FE -- 00AC00
3D 83 B5 86 3E C5 2E 1F EB 00 05 FC 46 C7 04 C4 -- 00AC10
B9 9C 36 FF 2E B9 9E 36 FF 2E FC 76 FF 15 7E 00 -- 00AC20
4F 3C 8B B6 C2 36 C5 2E 06 C4 83 00 5C 97 1E 9A -- 00AC30
83 B6 C8 1E 8E 2E B6 C6 3E 03 2E F8 8B 1E C7 6B -- 00AC40
2E 12 7E 00 3D 83 B5 86 3E C5 2E 22 75 00 1C 7D -- 00AC50
C4 83 00 5C 97 1E 9A B9 A0 36 FF 2E B9 A2 36 FF -- 00AC60
6B 4F 3C 8B B6 C2 36 C5 2E 00 E4 E9 00 01 B8 04 -- 00AC70
05 8B B6 C8 1E 8E 2E B6 C6 3E 03 2E F8 8B 1E C7 -- 00AC80
1E C6 6B 4E 35 8B B6 C2 3E C5 2E 59 74 FC 46 3B -- 00AC90
89 FC 46 8B B6 C8 1E 8E 2E B6 C6 3E 03 2E F8 8B -- 00ACA0
C2 1E C5 2E 32 7D 04 FE 7E 83 00 00 FE 46 C7 05 -- 00ACB0
03 2E E7 D1 FE 7E 8B F0 8B 1E C7 6B 4F 3F 8B B6 -- 00ACC0
09 74 00 0A 7D 83 FE 03 B6 C8 1E 8E 2E B6 C6 3E -- 00ACD0
8D 16 C8 EB FE 46 FF 00 01 05 C7 B6 32 3E C5 2E -- 00ACE0
B5 86 3E C5 2E 04 C4 83 00 54 E7 71 9A 50 FA 46 -- 00ACF0
1E C7 6B 4F 3C 8B B6 C2 36 C5 2E 54 7E 00 3D 83 -- 00AD00
C5 2E 35 FF B6 C8 1E 8E 2E B6 C6 3E 03 2E F8 8B -- 00AD10
2E F8 8B 1E C7 6B 4F 3C 8B 50 48 05 8B B6 C2 3E -- 00AD20
C2 3E C5 2E 1C 75 FF B6 C8 1E 8E 2E B6 C6 3E 03 -- 00AD30
A4 36 FF 2E B9 A6 36 FF 2E 35 FF 50 48 05 8B B6 -- 00AD40
```

```
56 CB 5E 5F C9 C0 2B 0E C4 83 00 5C 97 1E 9A B9 -- 00AD50
3E C5 2E 00 00 05 C7 B6 AE 3E C5 2E EC 8B 55 57 -- 00AD60
C5 2E 35 FF B6 AE 3E C5 2E 20 7E 00 3D 83 B5 86 -- 00AD70
9A B9 A8 36 FF 2E B9 AA 36 FF 2E 35 FF B6 C2 3E -- 00AD80
55 57 56 CB 5E 5F C9 C0 2B 08 C4 83 00 5C 97 1E -- 00AD90
B5 86 3E C5 2E 00 01 05 C7 B6 AE 3E C5 2E EC 8B -- 00ADA0
C2 3E C5 2E 35 FF B6 AE 3E C5 2E 20 7E 00 3D 83 -- 00ADB0
97 1E 9A B9 AC 36 FF 2E B9 AE 36 FF 2E 35 FF B6 -- 00ADC0
EC 8B 55 57 56 CB 5E 5F C9 C0 2B 08 C4 83 00 5C -- 00ADD0
3D 83 B5 86 3E C5 2E 00 02 05 C7 B6 AE 3E C5 2E -- 00ADE0
FF B6 C2 3E C5 2E 35 FF B6 AE 3E C5 2E 20 7E 00 -- 00ADF0

97 1E 9A B9 B0 36 FF 2E B9 B2 36 FF 2E 35 01 FE -- 00AE00
EC 8B 55 57 56 CB 5E 5F C9 C0 2B 08 C4 83 00 5C -- 00AE10
3D 83 B5 86 3E C5 2E 00 03 05 C7 B6 AE 3E C5 2E -- 00AE20
FF B6 C2 3E C5 2E 35 FF B6 AE 3E C5 2E 20 7E 00 -- 00AE30
00 5C 97 1E 9A B9 B4 36 FF 2E B9 B6 36 FF 2E 35 -- 00AE40
C5 2E EC 8B 55 57 56 CB 5E 5F C9 C0 2B 08 C4 83 -- 00AE50
7E 00 3D 83 B5 86 3E C5 2E 00 04 05 C7 B6 AE 3E -- 00AE60
2E 35 FF B6 C2 3E C5 2E 35 FF B6 AE 3E C5 2E 20 -- 00AE70
C4 83 00 5C 97 1E 9A B9 B8 36 FF 2E B9 BA 36 FF -- 00AE80
BC 3E C5 2E EC 8B 55 57 56 CB 5E 5F C9 C0 2B 08 -- 00AE90
2E 19 7E 00 3D 83 B5 86 3E C5 2E 00 00 05 C7 B9 -- 00AEA0
B9 C0 36 FF 2E B9 C2 36 FF 2E 35 FF B9 BC 3E C5 -- 00AEB0
83 00 14 95 7B 9A FF 6A 06 C4 83 00 5C 97 1E 9A -- 00AEC0
B6 32 3E C5 2E 00 00 05 C7 B6 BE 3E C5 2E 02 C4 -- 00AED0
09 75 00 01 3D 05 8B B5 AA 3E C5 2E 00 01 05 C7 -- 00AEE0
05 C7 B7 F4 3E C5 2E 00 00 05 C7 B6 A2 3E C5 2E -- 00AEF0
A2 3E C5 2E 27 7E 00 3D 83 B5 86 3E C5 2E 00 01 -- 00AF00
FF B6 BE 3E C5 2E 35 FF B6 32 3E C5 2E 35 FF B6 -- 00AF10
00 5C 97 1E 9A B9 C4 36 FF 2E B9 C6 36 FF 2E 35 -- 00AF20
C5 2E EC 8B 55 57 56 CB 5E 5F C9 C0 2B 0A C4 83 -- 00AF30
00 01 05 C7 B7 F0 3E C5 2E 00 01 05 C7 B9 BC 3E -- 00AF40
FF B9 BC 3E C5 2E 19 7E 00 3D 83 B5 86 3E C5 2E -- 00AF50
00 5C 97 1E 9A B9 C8 36 FF 2E B9 CA 36 FF 2E 35 -- 00AF60
3E C5 2E 02 C4 83 00 14 95 7B 9A FF 6A 06 C4 83 -- 00AF70
2E 00 01 05 C7 B6 32 3E C5 2E 00 00 05 C7 B6 BE -- 00AF80
B6 A2 3E C5 2E 09 75 00 01 3D 05 8B B5 AA 3E C5 -- 00AF90
C5 2E 27 7E 00 3D 83 B5 86 3E C5 2E 00 00 05 C7 -- 00AFA0
BE 3E C5 2E 35 FF B6 32 3E C5 2E 35 FF B6 A2 3E -- 00AFB0
97 1E 9A B9 CC 36 FF 2E B9 CE 36 FF 2E 35 FF B6 -- 00AFC0
00 38 C8 57 56 CB 5E 5F C9 C0 2B 0A C4 83 00 5C -- 00AFD0
20 7E 00 3D 83 B5 86 3E C5 2E 00 01 C8 46 C7 00 -- 00AFE0
FF 2E 35 FF B6 4E 3E C5 2E 35 FF B9 BC 3E C5 2E -- 00AFF0
83 00 5C 97 1E 9A B9 D0 36 FF 2E B9 D2 36 01 FE -- 00B000
C7 04 C4 83 00 5C DF 76 9A 50 CC 46 8D 16 08 C4 -- 00B010
1B 7D 05 3B CA 46 8B B6 4E 3E C5 2E 00 00 CA 46 -- 00B020
8B B8 EA 1E 8E 2E B8 E8 3E 03 2E E7 D1 CA 7E 8B -- 00B030
B6 4E 3E C5 2E D9 EB CA 46 FF 05 74 D2 46 3B 05 -- 00B040
7E 00 3D 83 B5 86 3E C5 2E 22 7C 05 3B CA 46 8B -- 00B050
00 5C 97 1E 9A B9 D4 36 FF 2E B9 D6 36 FF 2E 12 -- 00B060
3E C5 2E 40 CA 46 8B 00 F2 E9 FF FF B8 04 C4 83 -- 00B070
C5 2E 19 7E 00 3D 83 B5 86 3E C5 2E 05 89 B6 C2 -- 00B080
9A B9 D8 36 FF 2E B9 DA 36 FF 2E 35 FF B6 C2 3E -- 00B090
74 00 3D 83 B9 BC 3E C5 2E 06 C4 83 00 5C 97 1E -- 00B0A0
8B B6 C2 3E C5 2E 00 01 05 C7 B6 2E 3E C5 2E 34 -- 00B0B0
9A 35 FF B6 C2 3E C5 2E 05 89 B9 DC 3E C5 2E 05 -- 00B0C0
4E 9A 35 FF B6 C2 3E C5 2E 02 C4 83 00 14 94 0E -- 00B0D0
2E 12 7E 00 3D 83 B5 86 3E C5 2E 3C EB 00 14 98 -- 00B0E0
C4 83 00 5C 97 1E 9A B9 E0 36 FF 2E B9 E2 36 FF -- 00B0F0
```

```
B6 C2 3E C5 2E 02 C4 83 00 14 94 0E 9A FF 6A 04 -- 00B100
14 95 7B 9A FF 6A 02 C4 83 00 14 9C C0 9A 35 FF -- 00B110
FF 2E 12 7E 00 3D 83 B5 86 3E C5 2E 02 C4 83 00 -- 00B120
04 C4 83 00 5C 97 1E 9A B9 E4 36 FF 2E B9 E6 36 -- 00B130
3E C5 2E 04 C4 83 00 54 E7 71 9A 50 C8 46 8D 16 -- 00B140
E8 36 FF 2E B9 EA 36 FF 2E 12 7E 00 3D 83 B5 86 -- 00B150
56 CB 5E 5F C9 C0 2B 04 C4 83 00 5C 97 1E 9A B9 -- 00B160
C5 2E 19 7E 00 3D 83 B5 86 3E C5 2E EC 8B 55 57 -- 00B170
9A B9 EC 36 FF 2E B9 EE 36 FF 2E 35 FF B6 2E 3E -- 00B180
6B 4E 35 8B B6 C2 3E C5 2E 06 C4 83 00 5C 97 1E -- 00B190

05 8B B6 C8 1E 8E 2E B6 C6 3E 03 2E F8 8B 1E C6 -- 00B1A0
C5 1E 7E 00 3D 83 B5 86 3E C5 2E 05 89 0A 7E C5 -- 00B1B0
B9 F2 36 FF 2E 35 FF B6 C2 3E C5 2E 35 FF 0A 7E -- 00B1C0
C9 C0 2B 08 C4 83 00 5C 97 1E 9A B9 F0 36 FF 2E -- 00B1D0
3D 83 B5 86 3E C5 2E 00 00 98 C8 57 56 CB 5E 5F -- 00B1E0
97 1E 9A B9 F4 36 FF 2E B9 F6 36 FF 2E 12 7E 00 -- 00B1F0
5C D0 B3 9A 50 9C 46 8D 16 04 C4 83 00 5C 01 FE -- 00B200
16 64 6A 64 EC 83 50 FF 6A 86 8D 16 04 C4 83 00 -- 00B210
00 5C ED 6E 9A 50 00 08 05 C4 8B 16 50 9C 46 8D -- 00B220
B6 B6 3E C5 2E 68 C4 83 00 54 11 C5 9A 0A C4 83 -- 00B230
24 9A 50 FF 6A 86 8D 16 01 2A E9 03 75 00 3D 83 -- 00B240
E9 03 75 00 92 7E 83 92 46 89 04 C4 83 00 34 F9 -- 00B250
16 FD 8B 1B 7D 04 96 7E 83 00 00 96 46 C7 01 2E -- 00B260
96 7E 03 1F 16 FD 8B E4 2A DD 45 8A 96 7E 03 1F -- 00B270
00 3D 83 B5 86 3E C5 2E DF EB 96 46 FF 98 45 88 -- 00B280
46 8A 50 E4 2A 9A 46 8A 50 E4 2A 9B 46 8A 2A 7E -- 00B290
2E B9 FA 36 FF 2E 50 E4 2A 98 46 8A 50 E4 2A 99 -- 00B2A0
94 46 8D 16 0C C4 83 00 5C 97 1E 9A B9 F8 36 FF -- 00B2B0
B9 FC 36 FF 2E B9 FE 36 FF 2E 50 98 46 8D 16 50 -- 00B2C0
96 46 C7 10 C4 83 00 64 40 D0 9A 01 97 68 06 6A -- 00B2D0
8A 96 7E 03 1F 16 FD 8B 2D 7D 04 96 7E 83 00 00 -- 00B2E0
96 7E 8B 02 C4 83 00 5C ED AF 9A 50 E4 2A 98 45 -- 00B2F0
1D D9 9B B6 FE 1E 8E 2E B6 FC 3E 03 2E 02 E7 C1 -- 00B300
2E 12 7E 00 3D 83 B5 86 3E C5 2E CD EB 96 46 FF -- 00B310
C4 83 00 5C 97 1E 9A BA 00 36 FF 2E BA 02 36 FF -- 00B320
12 7E 00 3D 83 B5 86 3E C5 2E 00 14 DD BA 9A 04 -- 00B330
83 00 5C 97 1E 9A BA 04 36 FF 2E BA 06 36 FF 2E -- 00B340
0A 36 FF 2E 12 7E 00 3D 83 B5 86 3E C5 2E 04 C4 -- 00B350
C0 2B 04 C4 83 00 5C 97 1E 9A BA 08 36 FF 2E BA -- 00B360
1E 9A 50 FF 6A 86 8D 16 50 FF 68 86 8D 16 28 EB -- 00B370
FE D2 E9 03 75 00 FF 68 BE 83 08 C4 83 00 54 9E -- 00B380
56 CB 5E 5F C9 9B FF FF B8 00 02 05 C7 0A 7E C5 -- 00B390
2E 00 00 EC 46 C7 00 00 EA 46 C7 00 00 16 C8 57 -- 00B3A0
FF 2E BA 0E 36 FF 2E 12 7E 00 3D 83 B5 86 3E C5 -- 00B3B0
B6 22 3E C5 2E 04 C4 83 00 5C 97 1E 9A BA 0C 36 -- 00B3C0
E9 03 7F 00 3D 83 B5 86 3E C5 2E 1A 75 00 3D 83 -- 00B3D0
2E 01 07 E9 BA 10 36 FF 2E BA 12 36 FF 2E 01 1C -- 00B3E0
75 FF B7 58 3E C5 2E 22 7E 00 3D 83 B5 86 3E C5 -- 00B3F0
BA 16 36 FF 2E 35 FF 02 75 FF 04 75 FF 06 01 FE -- 00B400
3E C5 2E 0C C4 83 00 5C 97 1E 9A BA 14 36 FF 2E -- 00B410
8B B7 58 3E C5 2E 00 92 E9 03 74 00 3D 83 B5 AA -- 00B420
89 F6 46 89 99 02 45 8B FC 56 89 FA 46 89 99 05 -- 00B430
99 06 45 8B F4 56 89 F2 46 89 99 04 45 8B F8 56 -- 00B440
76 FF EC 76 FF 50 FE 46 8D 16 F0 56 89 EE 46 89 -- 00B450
76 FF F8 76 FF F2 76 FF F4 76 FF EE 76 FF 52 EA -- 00B460
83 18 C4 83 00 54 90 41 9A FA 76 FF FC 76 FF F6 -- 00B470
FF 15 7E 00 3D 83 B5 86 3E C5 2E 56 74 00 FE 7E -- 00B480
5C 97 1E 9A BA 18 36 FF 2E BA 1A 36 FF 2E FE 76 -- 00B490
9A FE 76 FF 00 6A 00 6A 00 6A 00 6A 06 C4 83 00 -- 00B4A0
```

```
AA  3E  C5  2E  46  EB  FF  FF  B8  0A  C4  83  00  64  28  52  --  00B4B0
83  00  14  B4  01  9A  01  6A  13  75  00  01  3D  05  8B  B5  --  00B4C0
B6  22  3E  C5  2E  00  00  05  C7  B6  A2  3E  C5  2E  02  C4  --  00B4D0
FF  2E  12  7E  00  3D  83  B5  86  3E  C5  2E  00  00  05  C7  --  00B4E0
04  C4  83  00  5C  97  1E  9A  BA  1C  36  FF  2E  BA  1E  36  --  00B4F0
B5  86  3E  C5  2E  EC  8B  55  57  56  CB  5E  5F  C9  C0  2B  --  00B500
22  36  FF  2E  35  FF  B5  AA  3E  C5  2E  19  7E  00  3D  83  --  00B510
C5  2E  06  C4  83  00  5C  97  1E  9A  BA  20  36  FF  2E  BA  --  00B520
00  3D  83  B5  86  3E  C5  2E  3E  75  00  3D  83  B5  AA  3E  --  00B530

5C  97  1E  9A  BA  24  36  FF  2E  BA  26  36  FF  2E  12  7E  --  00B540
3E  C5  2E  00  01  05  C7  B7  D0  3E  C5  2E  04  C4  83  00  --  00B550
BA  28  3E  C5  2E  00  44  57  C9  9A  00  01  05  C7  BA  28  --  00B560
00  01  3D  05  8B  B5  AA  3E  C5  2E  1F  EB  00  00  05  C7  --  00B570
A9  3D  9A  50  05  89  B7  60  3E  C5  2E  00  01  B8  13  75  --  00B580
C5  2E  00  01  05  C7  B6  2A  3E  C5  2E  02  C4  83  00  14  --  00B590
2E  35  FF  B7  D0  3E  C5  2E  45  7E  00  3D  83  B5  86  3E  --  00B5A0
BA  2C  36  FF  2E  BA  2E  36  FF  2E  35  FF  B6  2A  3E  C5  --  00B5B0
3D  05  8B  B5  AA  3E  C5  2E  08  C4  83  00  5C  97  1E  9A  --  00B5C0
BA  32  36  FF  2E  35  FF  B7  60  3E  C5  2E  19  75  00  01  --  00B5D0
C9  C0  2B  06  C4  83  00  5C  97  1E  9A  BA  30  36  FF  2E  --  00B5E0
3D  83  B5  86  3E  C5  2E  00  00  06  C8  57  56  CB  5E  5F  --  00B5F0
36  FF  2E  BA  36  36  FF  2E  0A  76  FF  15  7E  00  01  FE  --  00B600
E0  C1  48  0A  46  8B  06  C4  83  00  5C  97  1E  9A  BA  34  --  00B610
3D  83  B5  86  3E  C5  2E  00  00  FE  46  C7  FC  46  89  09  --  00B620
97  1E  9A  BA  38  36  FF  2E  BA  3A  36  FF  2E  12  7E  00  --  00B630
6A  50  FC  46  8D  16  50  FA  46  8D  16  04  C4  83  00  5C  --  00B640
7E  83  0E  C4  83  00  64  40  D0  9A  01  51  68  05  6A  04  --  00B650
76  FF  15  7E  00  3D  83  B5  86  3E  C5  2E  1F  74  00  FA  --  00B660
00  5C  97  1E  9A  BA  3C  36  FF  2E  BA  3E  36  FF  2E  FA  --  00B670
36  FF  2E  12  7E  00  3D  83  B5  86  3E  C5  2E  06  C4  83  --  00B680
16  04  C4  83  00  5C  97  1E  9A  BA  40  36  FF  2E  BA  42  --  00B690
01  51  68  05  6A  05  6A  50  FC  46  8D  16  50  FA  46  8D  --  00B6A0
C5  2E  1F  74  00  FA  7E  83  0E  C4  83  00  64  40  D0  9A  --  00B6B0
BA  46  36  FF  2E  FA  76  FF  15  7E  00  3D  83  B5  86  3E  --  00B6C0
3E  C5  2E  06  C4  83  00  5C  97  1E  9A  BA  44  36  FF  2E  --  00B6D0
48  36  FF  2E  BA  4A  36  FF  2E  12  7E  00  3D  83  B5  86  --  00B6E0
56  CB  5E  5F  C9  C0  2B  04  C4  83  00  5C  97  1E  9A  BA  --  00B6F0
83  00  64  4E  A1  9A  7B  18  68  01  6A  00  00  08  C8  57  --  00B700
00  3D  83  B5  86  3E  C5  2E  FA  56  89  F8  46  89  04  C4  --  00B710
35  FF  B6  4E  3E  C5  2E  35  FF  B6  BE  3E  C5  2E  2E  7E  --  00B720
FF  2E  35  FF  B7  90  3E  C5  2E  35  FF  B7  8C  3E  C5  2E  --  00B730
0C  C4  83  00  5C  97  1E  9A  BA  4C  36  FF  2E  BA  4E  36  --  00B740
14  7C  2A  9A  05  74  00  01  3D  05  8B  B6  BE  3E  C5  2E  --  00B750
3E  C5  2E  44  74  00  01  3D  05  8B  B6  BE  3E  C5  2E  00  --  00B760
50  36  FF  2E  BA  52  36  FF  2E  24  7E  00  3D  83  B5  86  --  00B770
FF  2E  BA  56  36  FF  2E  04  C4  83  00  5C  97  1E  9A  BA  --  00B780
6A  00  6A  00  6A  04  C4  83  00  5C  97  1E  9A  BA  54  36  --  00B790
6C  E9  0A  C4  83  00  64  28  52  9A  16  0B  68  00  6A  00  --  00B7A0
B5  86  3E  C5  2E  2C  75  00  3D  83  B6  4E  3E  C5  2E  05  --  00B7B0
36  FF  2E  BA  5A  36  FF  2E  05  55  E9  03  7F  00  3D  83  --  00B7C0
2E  BA  5E  36  FF  2E  04  C4  83  00  5C  97  1E  9A  BA  58  --  00B7D0
01  3D  05  8B  B5  86  3E  C5  2E  05  2E  E9  BA  5C  36  FF  --  00B7E0
BA  60  36  FF  2E  BA  62  36  FF  2E  00  D5  E9  03  7F  00  --  00B7F0
2E  BA  6A  36  FF  2E  04  C4  83  00  5C  97  1E  9A  01  FE  --  00B800
AC  9A  BA  64  36  FF  2E  BA  66  36  FF  2E  BA  68  36  FF  --  00B810
36  FF  2E  35  FF  BA  68  3E  C5  2E  08  C4  83  00  5C  81  --  00B820
2E  06  C4  83  00  5C  97  1E  9A  BA  6C  36  FF  2E  BA  6E  --  00B830
C4  83  00  5C  97  1E  9A  BA  70  36  FF  2E  BA  72  36  FF  --  00B840
BA  76  36  FF  2E  BA  78  36  FF  2E  BA  7A  36  FF  2E  04  --  00B850
```

60

```
3E  C5  2E  08  C4  83  00  5C  81  AC  9A  BA  74  36  FF  2E  --  00B860
1E  9A  BA  7C  36  FF  2E  BA  7E  36  FF  2E  35  FF  BA  78  --  00B870
BA  80  36  FF  2E  BA  82  36  FF  2E  06  C4  83  00  5C  97  --  00B880
36  FF  2E  BA  8A  36  FF  2E  04  C4  83  00  5C  97  1E  9A  --  00B890
5C  81  AC  9A  BA  84  36  FF  2E  BA  86  36  FF  2E  BA  88  --  00B8A0
BA  8E  36  FF  2E  35  FF  BA  88  3E  C5  2E  08  C4  83  00  --  00B8B0
3E  C5  2E  06  C4  83  00  5C  97  1E  9A  BA  8C  36  FF  2E  --  00B8C0
90  36  FF  2E  BA  92  36  FF  2E  12  7E  00  3D  83  B5  86  --  00B8D0

CC  9A  00  54  C8  1C  9A  04  C4  83  00  5C  97  1E  9A  BA  --  00B8E0
36  FF  2E  12  7E  00  3D  83  B5  86  3E  C5  2E  00  14  B0  --  00B8F0
2E  04  C4  83  00  5C  97  1E  9A  BA  94  36  FF  2E  BA  96  --  00B900
B7  8C  3E  C5  2E  05  89  F8  7E  C5  05  8B  B7  90  3E  C5  --  00B910
2E  B6  5C  36  FF  2E  66  6A  02  45  89  F8  7E  C5  05  8B  --  00B920
6E  9A  50  00  04  05  F8  46  8B  FA  76  FF  B6  5A  36  FF  --  00B930
36  FF  2E  BA  9A  36  FF  2E  12  6A  0A  C4  83  00  5C  ED  --  00B940
5C  ED  6E  9A  50  00  6A  05  F8  46  8B  FA  76  FF  BA  98  --  00B950
45  89  F8  7E  C5  05  8B  B7  AC  3E  C5  2E  0A  C4  83  00  --  00B960
46  C7  7E  45  89  F8  7E  C5  05  8B  BA  9C  3E  C5  2E  7C  --  00B970
2E  E7  D1  FE  7E  8B  25  7D  01  00  FE  7E  81  00  00  FE  --  00B980
E7  D1  FE  7E  8B  05  8B  BA  A2  1E  8E  2E  BA  A0  3E  03  --  00B990
2E  D4  EB  FE  46  FF  00  80  85  89  FA  5E  8E  F8  7E  03  --  00B9A0
3E  C5  2E  02  80  85  89  F8  7E  C5  05  8B  BA  88  3E  C5  --  00B9B0
B5  86  3E  C5  2E  02  82  85  89  F8  7E  C5  05  8B  BA  78  --  00B9C0
2E  00  00  02  86  85  C7  02  84  85  89  F8  7E  C5  05  8B  --  00B9D0
FF  2E  BA  A6  36  FF  2E  12  7E  00  3D  83  B5  86  3E  C5  --  00B9E0
FA  76  FF  57  56  04  C4  83  00  5C  97  1E  9A  BA  A4  36  --  00B9F0
75  FF  B6  0E  3E  C5  2E  50  02  88  05  F8  46  8B  01  FE  --  00BA00
FE  EC  9A  50  E0  D1  05  8B  B6  0A  3E  C5  2E  35  FF  02  --  00BA10
C5  2E  19  7E  00  3D  83  B5  86  3E  C5  2E  5E  5F  00  5C  --  00BA20
9A  BA  A8  36  FF  2E  BA  AA  36  FF  2E  35  FF  B6  4A  3E  --  00BA30
01  3D  05  8B  B6  4A  3E  C5  2E  06  C4  83  00  5C  97  1E  --  00BA40
36  FF  2E  12  7E  00  3D  83  B5  86  3E  C5  2E  5A  75  00  --  00BA50
2E  04  C4  83  00  5C  97  1E  9A  BA  AC  36  FF  2E  BA  AE  --  00BA60
C4  83  00  5C  94  D5  9A  B6  56  36  FF  2E  B6  58  36  FF  --  00BA70
83  B5  86  3E  C5  2E  00  00  05  C7  B6  4A  3E  C5  2E  04  --  00BA80
BA  B2  36  FF  2E  35  FF  B6  4A  3E  C5  2E  19  7E  00  3D  --  00BA90
3E  C5  2E  06  C4  83  00  5C  97  1E  9A  BA  B0  36  FF  2E  --  00BAA0
86  3E  C5  2E  00  D4  E9  03  74  00  01  3D  05  8B  BA  68  --  00BAB0
36  FF  2E  35  FF  BA  68  3E  C5  2E  19  7E  00  3D  83  B5  --  00BAC0
68  06  C4  83  00  5C  97  1E  9A  BA  B4  36  FF  2E  BA  B6  --  00BAD0
36  FF  2E  BA  BA  36  FF  2E  F8  76  FF  FA  76  FF  7B  18  --  00BAE0
83  B5  86  3E  C5  2E  0A  C4  83  00  64  3A  84  9A  BA  B8  --  00BAF0
1E  9A  BA  E4  36  FF  2E  BA  E6  36  FF  2E  12  7E  00  3D  --  00BB00
2E  00  00  05  C7  B6  32  3E  C5  2E  04  C4  83  00  5C  97  --  00BB10
00  05  C7  B7  AC  3E  C5  2E  00  00  05  C7  B6  BE  3E  C5  --  00BB20
C7  B6  26  3E  C5  2E  00  01  05  C7  B6  2A  3E  C5  2E  00  --  00BB30
01  05  C7  BA  28  3E  C5  2E  00  14  81  FE  9A  00  01  05  --  00BB40
2E  00  00  05  C7  BA  28  3E  C5  2E  00  44  57  C9  9A  00  --  00BB50
86  3E  C5  2E  01  B5  E9  03  75  00  3D  83  B7  8C  3E  C5  --  00BB60
BA  E8  36  FF  2E  BA  EA  36  FF  2E  12  7E  00  3D  83  B5  --  00BB70
01  91  E9  00  54  47  78  9A  04  C4  83  00  5C  97  1E  9A  --  00BB80
3E  C5  2E  01  68  E9  03  74  00  3D  83  BA  68  3E  C5  2E  --  00BB90
FF  2E  35  FF  BA  68  3E  C5  2E  19  7E  00  3D  83  B5  86  --  00BBA0
06  C4  83  00  5C  97  1E  9A  BA  BC  36  FF  2E  BA  BE  36  --  00BBB0
C2  36  FF  2E  00  6A  00  6A  00  6A  00  6A  00  6A  00  6A  --  00BBC0
46  89  10  C4  83  00  5C  A2  86  9A  BA  C0  36  FF  2E  BA  --  00BBD0
7E  00  3D  83  B5  86  3E  C5  2E  34  74  00  FC  7E  83  FC  --  00BBE0
5C  97  1E  9A  BA  C4  36  FF  2E  BA  C6  36  FF  2E  50  13  --  00BBF0
6A  00  00  05  C7  B6  BE  3E  C5  2E  06  C4  83  00  01  FE  --  00BC00
```

61

```
3E C5 2E FB 8F E9 FC 76 FF 00 6A 00 6A 00 6A 00 -- 00BC10
C8 36 FF 2E BA CA 36 FF 2E 12 7E 00 3D 83 B5 86 -- 00BC20
C5 2E 00 54 C8 76 9A 04 C4 83 00 5C 97 1E 9A BA -- 00BC30
36 FF 2E BA CE 36 FF 2E 12 7E 00 3D 83 B5 86 3E -- 00BC40
2E 00 64 22 FA 9A 04 C4 83 00 5C 97 1E 9A BA CC -- 00BC50
68 00 6A 00 6A 00 6A B6 5A 36 FF 2E B6 5C 36 FF -- 00BC60
FF 2E 04 6A 0A 6A 04 6A F8 76 FF FA 76 FF 7B 18 -- 00BC70

1A C4 83 00 5C A6 44 9A BA D0 36 FF 2E BA D2 36 -- 00BC80
C5 2E 00 01 05 C7 B7 94 3E C5 2E 00 64 23 34 9A -- 00BC90
36 FF 2E BA D6 36 FF 2E 12 7E 00 3D 83 B5 86 3E -- 00BCA0
00 6A 00 6A 00 6A 04 C4 83 00 5C 97 1E 9A BA D4 -- 00BCB0
BA D8 36 FF 2E BA DA 36 FF 2E 00 6A 00 6A 00 6A -- 00BCC0
75 00 FC 7E 83 FC 46 89 10 C4 83 00 5C A2 86 9A -- 00BCD0
1E E9 03 7F 00 3D 83 B5 86 3E C5 2E FE 18 E9 03 -- 00BCE0
5C 97 1E 9A BA DC 36 FF 2E BA DE 36 FF 2E 50 FF -- 00BCF0
7E 00 3D 83 B5 86 3E C5 2E FF 08 E9 06 C4 83 00 -- 00BD00
00 5C 97 1E 9A BA E0 36 FF 2E BA E2 36 FF 2E 12 -- 00BD10
C4 83 00 64 4E E3 9A F8 76 FF FA 76 FF 04 C4 83 -- 00BD20
C7 B6 BE 3E C5 2E 00 00 05 C7 B6 32 3E C5 2E 04 -- 00BD30
2A 3E C5 2E 00 00 05 C7 B7 AC 3E C5 2E 00 00 05 -- 00BD40
26 9A 00 01 05 C7 B6 26 3E C5 2E 00 01 05 C7 B6 -- 00BD50
00 3D 83 B5 86 3E C5 2E 00 54 46 BD 9A 00 14 80 -- 00BD60
5C 97 1E 9A BA EC 36 FF 2E BA EE 36 FF 2E 12 7E -- 00BD70
00 00 02 C8 57 56 CB 5E 5F C9 C0 2B 04 C4 83 00 -- 00BD80
2E BA F2 36 FF 2E 12 7E 00 3D 83 B5 86 3E C5 2E -- 00BD90
F4 3E C5 2E 04 C4 83 00 5C 97 1E 9A BA F0 36 FF -- 00BDA0
00 3D 83 B5 86 3E C5 2E 5B 75 00 02 3D 05 8B BA -- 00BDB0
5C 97 1E 9A BA F8 36 FF 2E BA FA 36 FF 2E 12 7E -- 00BDC0
BA 9C 3E C5 2E 05 8B BA FC 3E C5 2E 04 C4 83 00 -- 00BDD0
86 E9 03 7C 01 00 FE 7E 81 00 00 FE 46 C7 05 89 -- 00BDE0
FE 7E 8B E4 2A 05 8A FE 7E 03 BB 00 3E C5 2E 00 -- 00BDF0
05 89 BA A2 1E 8E 2E BA A0 3E 03 2E E7 D1 01 FE -- 00BE00
75 00 01 3D 05 8B BA F4 3E C5 2E D4 EB FE 46 FF -- 00BE10
BB 06 36 FF 2E 12 7E 00 3D 83 B5 86 3E C5 2E 58 -- 00BE20
3E C5 2E 04 C4 83 00 5C 97 1E 9A BB 04 36 FF 2E -- 00BE30
00 00 FE 46 C7 05 89 BA 9C 3E C5 2E 05 8B BB 08 -- 00BE40
8A FE 7E 03 BB 0C 3E C5 2E 22 7D 01 00 FE 7E 81 -- 00BE50
1E 8E 2E BA A0 3E 03 2E E7 D1 FE 7E 8B E4 2A 05 -- 00BE60
3D 83 B5 86 3E C5 2E D7 EB FE 46 FF 05 89 BA A2 -- 00BE70
97 1E 9A BB 10 36 FF 2E BB 12 36 FF 2E 12 7E 00 -- 00BE80
EC 8B 55 57 56 CB 5E 5F C9 C0 2B 04 C4 83 00 5C -- 00BE90
36 FF 2E 0A 76 FF 15 7E 00 3D 83 B5 86 3E C5 2E -- 00BEA0
2E 06 C4 83 00 5C 97 1E 9A BB 14 36 FF 2E BB 16 -- 00BEB0
C4 83 00 34 ED BA 9A B5 F6 36 FF 2E B5 F8 36 FF -- 00BEC0
BB 1A 36 FF 2E 12 7E 00 3D 83 B5 86 3E C5 2E 04 -- 00BED0
36 FF 2E 04 C4 83 00 5C 97 1E 9A BB 18 36 FF 2E -- 00BEE0
2E 04 C4 83 00 34 EE 9B 9A B5 EE 36 FF 2E B5 F0 -- 00BEF0
FF 2E BB 1E 36 FF 2E 12 7E 00 3D 83 B5 86 3E C5 -- 00BF00
B5 F0 36 FF 2E 04 C4 83 00 5C 97 1E 9A BB 1C 36 -- 00BF10
6A B5 F6 36 FF 2E B5 F8 36 FF 2E B5 EE 36 FF 2E -- 00BF20
86 3E C5 2E 0C C4 83 00 4C 34 6A 9A 0A 76 FF 13 -- 00BF30
BB 20 36 FF 2E BB 22 36 FF 2E 12 7E 00 3D 83 B5 -- 00BF40
00 4C 36 B5 9A 0A 76 FF 04 C4 83 00 5C 97 1E 9A -- 00BF50
36 FF 2E 12 7E 00 3D 83 B5 86 3E C5 2E 02 C4 83 -- 00BF60
2B 04 C4 83 00 5C 97 1E 9A BB 24 36 FF 2E BB 26 -- 00BF70
83 B5 86 3E C5 2E EC 8B 55 57 56 CB 5E 5F C9 C0 -- 00BF80
BB 2A 36 FF 2E 35 FF B6 4E 3E C5 2E 19 7E 00 3D -- 00BF90
9A FF 6A 06 C4 83 00 5C 97 1E 9A BB 28 36 FF 2E -- 00BFA0
01 3D 05 8B B6 4A 3E C5 2E 02 C4 83 00 14 94 0E -- 00BFB0
```

```
36 FF 2E 12 7E 00 3D 83 B5 86 3E C5 2E 37 75 00 -- 00BFC0
2E 04 C4 83 00 5C 97 1E 9A BB 2C 36 FF 2E BB 2E -- 00BFD0
C4 83 00 5C 94 D5 9A B6 56 36 FF 2E B6 58 36 FF -- 00BFE0
83 B5 86 3E C5 2E 00 00 05 C7 B6 4A 3E C5 2E 04 -- 00BFF0
BB 30 36 FF 2E BB 32 36 FF 2E 12 7E 00 3D 01 FE -- 00C000
57 56 CB 5E 5F C9 C0 2B 04 C4 83 00 5C 97 1E 9A -- 00C010

36 FF 2E 12 7E 00 3D 83 B5 86 3E C5 2E EC 8B 55 -- 00C020
2E 04 C4 83 00 5C 97 1E 9A BB 34 36 FF 2E BB 36 -- 00C030
2E 00 00 05 C7 20 75 00 01 3D 05 8B B7 F0 3E C5 -- 00C040
FF 2E BB 3A 36 FF 2E 12 7E 00 3D 83 B5 86 3E C5 -- 00C050
B7 F4 3E C5 2E 04 C4 83 00 5C 97 1E 9A BB 38 36 -- 00C060
B5 86 3E C5 2E 00 00 05 C7 20 75 00 01 3D 05 8B -- 00C070
9A BB 3C 36 FF 2E BB 3E 36 FF 2E 12 7E 00 3D 83 -- 00C080
C4 83 00 14 94 0E 9A FF 6A 04 C4 83 00 5C 97 1E -- 00C090
BB 42 36 FF 2E 12 7E 00 3D 83 B5 86 3E C5 2E 02 -- 00C0A0
C9 C0 2B 04 C4 83 00 5C 97 1E 9A BB 40 36 FF 2E -- 00C0B0
3D 83 B5 86 3E C5 2E 00 00 36 C8 57 56 CB 5E 5F -- 00C0C0
BB 44 36 FF 2E BB 46 36 FF 2E 0A 76 FF 15 7E 00 -- 00C0D0
D0 46 C7 00 13 F0 46 C7 06 C4 83 00 5C 97 1E 9A -- 00C0E0
01 0A 7E 83 00 00 F4 46 C7 01 80 D2 46 C7 00 00 -- 00C0F0
C7 03 FF CE 46 C7 00 00 CC 46 C7 00 AF E9 03 74 -- 00C100
FF 2E 12 7E 00 3D 83 B5 86 3E C5 2E 04 00 F2 46 -- 00C110
04 C4 83 00 5C 97 1E 9A BB 48 36 FF 2E BB 4A 36 -- 00C120
2E BB 56 36 FF 2E 12 7E 00 3D 83 B5 86 3E C5 2E -- 00C130
CA 46 8D 16 04 C4 83 00 5C 97 1E 9A BB 54 36 FF -- 00C140
13 6A 00 6A 00 6A 50 CC 46 8D 16 00 6A 00 6A 50 -- 00C150
24 74 00 CA 7E 83 14 C4 83 00 54 5C A2 9A 01 6A -- 00C160
36 FF 2E CA 76 FF 15 7E 00 3D 83 B5 86 3E C5 2E -- 00C170
B8 06 C4 83 00 5C 97 1E 9A BB 58 36 FF 2E BB 5A -- 00C180
FF 2E 12 7E 00 3D 83 B5 86 3E C5 2E 6E EB FF FE -- 00C190
04 C4 83 00 5C 97 1E 9A BB 5C 36 FF 2E BB 5E 36 -- 00C1A0
C7 04 00 CC 46 C7 29 75 02 0A 7E 83 4E EB C0 2B -- 00C1B0
3D 83 B5 86 3E C5 2E 00 00 F2 46 C7 07 FF CE 46 -- 00C1C0
BB 4C 36 FF 2E BB 4E 36 FF 2E FF 5A E9 03 7F 00 -- 00C1D0
36 FF 2E 12 7E 00 3D 83 B5 86 3E C5 2E FF 45 E9 -- 00C1E0
B8 04 C4 83 00 5C 97 1E 9A BB 50 36 FF 2E BB 52 -- 00C1F0
3E C5 2E EC 8B 55 57 56 CB 5E 5F C9 FF FF 01 FE -- 00C200
B6 58 36 FF 2E 1B EB C0 2B 04 75 00 3D 83 B6 4A -- 00C210
3E C5 2E 04 C4 83 00 5C 94 D5 9A B6 56 36 FF 2E -- 00C220
33 76 00 3C 86 9A CB 5E 5F C9 00 00 05 C7 B6 4A -- 00C230
00 00 00 24 31 54 00 24 33 99 00 24 31 52 00 24 -- 00C240
33 74 00 24 33 60 00 24 33 5C 00 24 00 53 00 24 -- 00C250
31 6A 00 24 33 68 00 24 00 CC 00 24 00 A7 00 24 -- 00C260
31 4A 00 24 31 60 00 24 31 5A 00 24 00 F1 00 24 -- 00C270
01 A0 00 24 01 4D 00 24 01 28 00 24 01 06 00 24 -- 00C280
02 20 00 24 01 EE 00 24 01 E0 00 24 01 DD 00 24 -- 00C290
02 91 00 24 31 4C 00 24 02 31 00 24 02 23 00 24 -- 00C2A0
02 C8 00 24 3A AC 00 24 02 B2 00 24 3A BC 00 24 -- 00C2B0
3A AA 00 24 31 56 00 24 31 5E 00 24 31 58 00 24 -- 00C2C0
31 72 00 24 03 2E 00 24 02 E5 00 24 33 58 00 24 -- 00C2D0
31 70 00 24 31 36 00 24 33 56 00 24 33 54 00 24 -- 00C2E0
03 75 00 24 34 82 00 24 31 A6 00 24 31 A2 00 24 -- 00C2F0
31 38 00 24 03 F7 00 24 03 AA 00 24 03 8B 00 24 -- 00C300
86 A2 00 24 33 32 00 24 04 50 00 24 31 32 00 24 -- 00C310
04 B3 00 24 04 79 00 24 33 40 00 3C 86 F6 00 3C -- 00C320
34 80 00 24 05 2C 00 24 33 9A 00 24 05 07 00 24 -- 00C330
33 4C 00 24 05 68 00 24 33 9C 00 24 33 9B 00 24 -- 00C340
AE D8 00 3C AE D6 00 3C AE DC 00 3C AE DA 00 24 -- 00C350
06 21 00 24 06 02 00 24 31 64 00 24 05 C2 00 3C -- 00C360
```

```
31 A8 00 3C AE 54 00 24 06 74 00 24 31 44 00 24 -- 00C370
31 3C 00 24 31 AC 00 24 31 30 00 24 31 3A 00 24 -- 00C380
33 AA 00 24 33 D6 00 24 33 C2 00 24 33 B2 00 24 -- 00C390
33 CA 00 24 33 CE 00 24 33 D2 00 24 33 BA 00 24 -- 00C3A0
00 24 07 03 00 24 06 D8 00 24 06 BD 00 02 00 24 -- 00C3B0

00 24 07 77 00 24 07 64 00 24 07 25 00 24 F4 96 -- 00C3C0
00 24 08 3E 00 24 08 28 00 24 07 E5 00 24 07 BB -- 00C3D0
00 24 08 EF 00 24 08 A9 00 24 08 9C 00 24 08 7E -- 00C3E0
00 24 F4 A6 3F E0 00 00 00 00 00 00 00 24 09 04 -- 00C3F0
09 86 00 24 09 45 40 6F E0 00 00 00 00 01 FE -- 00C400
33 44 00 24 0A 0F 00 24 09 AE 00 24 09 A1 00 24 -- 00C410
0A DB 00 24 0A A0 00 24 31 2E 00 24 0A 63 00 24 -- 00C420
0B AB 00 24 0B 70 00 24 0B 4F 00 24 0B 35 00 24 -- 00C430
0C 80 00 24 0C 67 00 24 0C 35 00 24 0B FE 00 24 -- 00C440
0C E0 00 6C 27 C4 00 3C 90 C2 00 3C 91 14 00 24 -- 00C450
0D DF 00 24 0D A9 00 24 0D 4F 00 24 0D 1A 00 24 -- 00C460
0E 8C 00 24 0E 59 00 24 0D F9 00 24 31 6E 00 24 -- 00C470
0F 75 00 24 0F 49 00 24 0F 1E 00 24 0E C2 00 24 -- 00C480
CD C4 00 24 0F F6 00 24 31 34 00 24 0F A1 00 24 -- 00C490
31 6C 00 24 10 A6 00 24 10 71 00 24 10 23 00 3C -- 00C4A0
11 30 00 24 31 68 00 24 31 66 00 24 10 E8 00 24 -- 00C4B0
11 E1 00 24 11 D4 00 24 11 A8 00 24 11 89 00 24 -- 00C4C0
12 B3 00 24 12 9C 00 24 12 64 00 24 12 0F 00 24 -- 00C4D0
13 50 00 24 13 43 00 24 13 27 00 24 13 0D 00 24 -- 00C4E0
14 06 00 24 13 E1 00 24 13 C8 00 24 13 7B 00 24 -- 00C4F0
14 76 00 24 14 30 00 24 31 AA 00 3C F5 A4 00 24 -- 00C500
39 EA 00 24 14 A9 00 24 14 9C 00 24 14 88 00 24 -- 00C510
3F 99 99 99 99 99 9A 00 24 14 E9 00 08 00 24 -- 00C520
15 5E 00 24 15 43 00 03 3F F0 00 00 00 00 00 00 -- 00C530
39 2A 00 24 15 E6 00 24 15 D9 00 24 15 98 00 24 -- 00C540
62 4D D2 F1 A9 FC 00 24 39 1A 00 24 34 9A 00 24 -- 00C550
00 64 00 24 16 1E BF 50 62 4D D2 F1 A9 FC 3F 50 -- 00C560
17 45 00 24 17 04 00 24 16 AA 00 24 16 6C 00 FF -- 00C570
18 2E 00 24 18 14 00 24 17 BA 00 24 17 8F 00 24 -- 00C580
18 A5 00 24 18 8B 00 24 18 7E 00 24 18 42 00 24 -- 00C590
34 86 00 24 19 4A 00 24 18 FF 00 24 18 E1 00 24 -- 00C5A0
1A 11 00 24 1A 04 00 24 19 BC 00 24 19 76 00 24 -- 00C5B0
1A CE 00 24 1A 74 00 24 1A 59 00 24 1A 1E 00 24 -- 00C5C0
1B 65 00 24 1B 54 00 24 1B 1A 00 24 1B 0D 00 24 -- 00C5D0
0D DC 00 6C 0D D8 00 6C 0D D4 00 24 1B 80 00 24 -- 00C5E0
1B E9 40 08 00 00 00 00 00 00 00 6C 0D E0 00 6C -- 00C5F0
00 24 1C 8B 00 24 1C 7E 00 24 1C 2D 00 24 01 FE -- 00C600
99 99 99 9A 00 24 1C F5 00 24 1C E8 00 24 1C CD -- 00C610
00 24 1D 56 BF B9 99 99 99 99 99 9A 3F B9 99 99 -- 00C620
00 24 1E 3C 00 24 1D EC 00 24 1D EA 00 24 1D AF -- 00C630
00 24 1E E5 00 24 1E 9A 00 24 1E 98 00 24 1E 49 -- 00C640
00 24 1F 67 00 24 1F 4D 00 24 1F 2E 00 24 1F 1B -- 00C650
00 24 1F FC 00 24 1F E8 00 24 1F D5 00 24 1F 81 -- 00C660
00 24 21 44 00 24 20 F8 00 24 20 AC 00 24 20 60 -- 00C670
00 24 22 12 00 24 21 DC 00 24 34 84 00 24 21 90 -- 00C680
00 24 23 4F 00 24 23 06 00 24 22 A6 00 24 22 72 -- 00C690
00 24 23 CC 00 24 23 C6 00 24 31 A4 00 24 23 9F -- 00C6A0
00 24 24 99 00 24 24 65 00 24 24 2C 00 24 23 D2 -- 00C6B0
00 24 25 1E 00 24 24 DF 00 24 F4 CB 00 24 24 B5 -- 00C6C0
00 24 25 9E 00 24 25 71 00 24 25 4F 00 24 25 31 -- 00C6D0
00 24 26 B8 00 24 26 7E 00 24 26 24 00 24 25 DC -- 00C6E0
00 24 27 4F 00 24 27 39 00 24 26 E6 00 24 31 46 -- 00C6F0
00 24 27 ED 00 24 27 CE 00 24 27 93 00 24 27 74 -- 00C700
00 24 28 CD 00 24 28 9C 00 24 28 35 00 24 28 28 -- 00C710
```

64

EP 0 533 348 A2

```
00 24 29 A3 00 24 29 52 00 24 29 28 00 24 28 F7 -- 00C720
00 24 29 FF 00 24 29 B4 00 24 29 A6 00 3C 86 A0 -- 00C730
00 24 2A 4D 00 24 2A 10 00 24 2A 02 00 24 31 50 -- 00C740
00 24 2A 88 00 24 2A 5E 00 24 2A 50 00 24 31 4E -- 00C750

00 24 2A AE 00 24 3A CE 00 24 3A CC 00 3C 90 C6 -- 00C760
00 24 2B 31 00 24 2B 06 00 24 2A E2 00 24 2A BD -- 00C770
00 24 2B C4 00 24 2B BC 00 24 2B 85 00 24 2B 7D -- 00C780
00 24 2C 3A 00 24 2C 32 00 24 2C 18 00 24 2C 00 -- 00C790
00 24 2C F9 00 24 2C BD 00 24 2C 81 00 24 2C 7A -- 00C7A0
00 24 77 8E 00 24 2D 89 00 24 2D 2F 00 24 2D 0A -- 00C7B0
00 24 2D D5 00 3C B3 2A 00 3C B3 14 00 24 2D A7 -- 00C7C0
00 24 2E 09 00 24 2D FC 00 3C B4 2A 00 3C B3 16 -- 00C7D0
00 24 2E 7A 00 24 2E 62 00 24 2E 49 00 24 2E 3D -- 00C7E0
00 24 2F 56 00 24 2E FC 00 24 2E C1 00 24 2E 87 -- 00C7F0
30 2D 00 24 2F D3 00 24 2F A5 00 24 2F 79 01 FE -- 00C800
30 CE 00 24 30 9C 00 24 30 75 00 24 30 4E 00 24 -- 00C810
00 00 06 C8 57 56 00 24 31 21 00 24 30 E6 00 24 -- 00C820
2E 00 2C FF 66 9A 00 14 EF 8F 9A 00 00 FE 46 C7 -- 00C830
C4 83 00 64 52 82 9A F2 22 36 FF 2E F2 24 36 FF -- 00C840
00 6A 00 6A 00 6A 11 74 00 FE 7E 83 FE 46 89 04 -- 00C850
F2 26 3E C5 2E 0A C4 83 00 64 28 52 9A 50 04 6A -- 00C860
09 EB 00 00 05 C7 F2 2A 3E C5 2E 0B 75 00 3D 83 -- 00C870
3D 83 F2 2E 3E C5 2E 00 01 05 C7 F2 2A 3E C5 2E -- 00C880
C5 2E 09 EB 00 06 05 C7 F2 32 3E C5 2E 0B 74 00 -- 00C890
00 0B 05 C7 F2 36 3E C5 2E 00 05 05 C7 F2 32 3E -- 00C8A0
05 8B F2 42 3E C5 2E 00 0F 05 C7 F2 3A 3E C5 2E -- 00C8B0
46 89 05 8B F2 42 3E C5 2E 05 89 F2 3E 3E C5 2E -- 00C8C0
C5 2E 48 FA 46 03 14 04 6B 26 F2 36 36 C4 2E FA -- 00C8D0
8B F2 3A 3E C5 2E F2 4E 36 C4 2E 05 89 F2 46 3E -- 00C8E0
C5 2E 05 89 F2 4A 3E C5 2E 04 03 26 02 E0 C1 05 -- 00C8F0
FF 3D 05 8B F2 26 3E C5 2E 02 FF 05 C7 F2 52 3E -- 00C900
F2 5A 3E C5 2E 0F 05 C6 F2 56 3E C5 2E 12 7D 00 -- 00C910
3E C5 2E FD 05 C6 F2 56 3E C5 2E 10 EB 0E 05 C6 -- 00C920
C4 83 00 64 4E A1 9A 0C 6A 09 6A FC 05 C6 F2 5A -- 00C930
6A 15 75 C2 0B 02 55 89 05 89 F2 5E 3E C5 2E 04 -- 00C940
83 00 64 28 52 9A D3 03 68 04 6A 00 6A 00 6A 00 -- 00C950
C5 2E 00 14 C9 41 9A 00 14 BD A9 9A 3C EB 0A C4 -- 00C960
04 C4 83 00 64 4E E3 9A 35 FF 02 75 FF F2 5E 3E -- 00C970
46 FF FC 7E 8B 15 7D 04 FC 7E 83 00 00 FC 46 C7 -- 00C980
E5 EB 01 05 C6 F2 64 1E 8E 2E F2 62 3E 03 2E FC -- 00C990
2E 00 00 FE 46 C7 00 00 02 C8 57 56 CB 5E 5F C9 -- 00C9A0
6A 3E C5 2E 00 B3 E9 03 75 00 3D 83 F2 66 3E C5 -- 00C9B0
00 03 3D 05 8B F2 6E 3E C5 2E 25 74 00 3D 83 F2 -- 00C9C0
76 3E C5 2E 0A 75 00 3D 83 F2 72 3E C5 2E 19 74 -- 00C9D0
50 FE 46 8D 16 00 14 E7 AC 9A 05 74 00 3D 83 F2 -- 00C9E0
02 6A 35 FF F2 7A 3E C5 2E 35 FF F2 7E 3E C5 2E -- 00C9F0
00 FE 7E 83 0C C4 83 00 64 3D BA 9A 16 6A 01 FE -- 00CA00
28 52 9A FE 76 FF 00 6A 00 6A 00 6A 00 6A 13 74 -- 00CA10
2E 42 74 00 3D 83 F2 76 3E C5 2E 0A C4 83 00 64 -- 00CA20
C5 2E 50 FE 46 8D 16 38 75 00 3D 83 F2 72 3E C5 -- 00CA30
16 6A 02 6A 35 FF F2 7A 3E C5 2E 35 FF F2 82 3E -- 00CA40
00 6A 13 74 00 FE 7E 83 0C C4 83 00 64 3D BA 9A -- 00CA50
C4 83 00 64 28 52 9A FE 76 FF 00 6A 00 6A 00 6A -- 00CA60
00 00 FE 46 C7 00 00 04 C8 57 56 CB 5E 5F C9 0A -- 00CA70
05 89 F2 86 3E C5 2E 05 04 6B 26 F2 36 36 C4 2E -- 00CA80
89 F2 8A 3E C5 2E 02 E0 C1 05 8B F2 3A 3E C5 2E -- 00CA90
C6 F2 92 3E C5 2E 00 0C 05 C7 F2 8E 3E C5 2E 05 -- 00CAA0
C6 F2 9A 3E C5 2E 01 05 C6 F2 96 3E C5 2E 03 05 -- 00CAB0
14 BF 60 9A 35 FF 02 75 FF F2 5E 3E C5 2E 03 05 -- 00CAC0
```

65

```
FF 2E F2 88 36 FF 2E 50 FE 46 8D 16 04 C4 83 00 -- 00CAD0
2E 10 6A F2 7E 36 FF 2E F2 80 36 FF 2E F2 86 36 -- 00CAE0
83 00 64 3D BA 9A 08 6A 06 6A 35 FF F2 7A 3E C5 -- 00CAF0

00 6A 00 6A 00 6A 00 6A 16 74 00 FE 7E 83 14 C4 -- 00CB00
C5 2E 01 0A E9 0A C4 83 00 64 28 52 9A FE 76 FF -- 00CB10
04 FC 7E 83 00 00 FC 46 C7 00 01 05 C7 F2 66 3E -- 00CB20
FC 46 8B 50 FE 46 8D 16 37 75 00 FE 7E 83 3D 7D -- 00CB30
00 6A 50 52 F2 A0 16 8B 2E F2 9E 06 03 2E E0 D1 -- 00CB40
05 6A 35 FF F2 7A 3E C5 2E 35 FF F2 7E 3E C5 2E -- 00CB50
83 BD EB FC 46 FF 12 C4 83 00 64 3D BA 9A 02 6A -- 00CB60
83 00 14 C1 24 9A 50 FE 46 8D 16 93 75 00 FE 7E -- 00CB70
00 05 C6 F2 A2 3E C5 2E 80 75 00 FE 7E 83 04 C4 -- 00CB80
00 05 C6 F2 AA 3E C5 2E 00 05 C6 F2 A6 3E C5 2E -- 00CB90
00 05 C6 F2 B2 3E C5 2E 00 05 C6 F2 AE 3E C5 2E -- 00CBA0
00 05 C6 F2 BA 3E C5 2E 00 05 C6 F2 B6 3E C5 2E -- 00CBB0
00 05 C6 F2 C2 3E C5 2E 00 05 C6 F2 BE 3E C5 2E -- 00CBC0
00 05 C6 F2 CA 3E C5 2E 01 05 C6 F2 C6 3E C5 2E -- 00CBD0
00 05 C6 F2 D2 3E C5 2E 00 05 C6 F2 CE 3E C5 2E -- 00CBE0
00 05 C6 F2 DA 3E C5 2E 01 05 C6 F2 D6 3E C5 2E -- 00CBF0
C6 F2 E2 3E C5 2E 00 05 C6 F2 DE 3E C5 2E 01 FE -- 00CC00
C6 F2 EA 3E C5 2E 00 05 C6 F2 E6 3E C5 2E 01 05 -- 00CC10
57 56 CB 5E 5F C9 00 05 C6 F2 EE 3E C5 2E 00 05 -- 00CC20
6B 16 7D 0C FE 7E 83 00 00 FE 46 C7 00 00 02 C8 -- 00CC30
05 88 FE 46 8B 0C 5E 8E 0A 7E 03 F8 8B 09 FE 46 -- 00CC40
36 C4 2E 00 00 5B 45 C7 0A 7E C5 E4 EB FE 46 FF -- 00CC50
2E 00 00 5F 45 C7 5D 45 89 48 05 04 6B 26 F2 36 -- 00CC60
37 45 C7 61 45 89 0A 7E C5 48 05 8B F2 3A 3E C5 -- 00CC70
39 45 89 0A 7E C5 48 05 8B F2 36 3E C5 2E 00 00 -- 00CC80
3E C5 2E 3B 45 89 0A 7E C5 05 8B F2 3A 3E C5 2E -- 00CC90
3E C5 2E 3D 45 89 0A 7E C5 48 E0 D1 05 8B F2 3A -- 00CCA0
8B F2 36 3E C5 2E 01 45 89 0A 7E C5 05 8B F2 36 -- 00CCB0
05 45 89 3B 45 8B 03 45 89 0A 7E C5 48 E0 D1 05 -- 00CCC0
C5 E0 D1 05 8B F2 36 3E C5 2E 07 45 89 3D 45 8B -- 00CCD0
3B 45 8B 0C 45 89 48 03 04 6B 26 0A 45 89 0A 7E -- 00CCE0
13 45 89 03 04 6B 26 10 45 89 3D 45 8B 0E 45 89 -- 00CCF0
45 89 0A 7E C5 48 02 E0 C1 05 8B F2 36 3E C5 2E -- 00CD00
3E C5 2E 19 45 89 3D 45 8B 17 45 89 3B 45 8B 15 -- 00CD10
04 6B 26 40 45 89 0A 7E C5 02 E0 C1 05 8B F2 36 -- 00CD20
45 89 3D 45 8B 44 45 89 3B 45 8B 42 45 89 48 05 -- 00CD30
C5 2E 66 45 89 48 05 04 6B 26 00 00 64 45 C7 46 -- 00CD40
36 C4 2E 68 45 89 0A 7E C5 E0 D1 05 8B F2 3A 3E -- 00CD50
49 45 89 37 45 8B 6A 45 89 48 03 04 6B 26 F2 3A -- 00CD60
3E C5 2E 4D 45 89 03 04 6B 26 4B 45 89 39 45 8B -- 00CD70
45 8B 4F 45 89 0A 7E C5 48 02 E0 C1 05 8B F2 3A -- 00CD80
20 45 89 4D 45 8B 1E 45 89 03 45 8B 1C 45 89 01 -- 00CD90
89 0C 45 8B 25 45 89 0A 45 8B 22 45 89 4F 45 8B -- 00CDA0
45 8B 2B 45 89 4F 45 8B 29 45 89 4D 45 8B 27 45 -- 00CDB0
32 45 89 4D 45 8B 30 45 89 15 45 8B 2E 45 89 13 -- 00CDC0
89 42 45 8B 52 45 89 40 45 8B 34 45 89 4F 45 8B -- 00CDD0
5F C9 58 45 89 4F 45 8B 56 45 89 4D 45 8B 54 45 -- 00CDE0
2B E3 46 C6 2B E2 46 C6 00 00 22 C8 57 56 CB 5E -- 00CDF0
46 C6 2D E6 46 C6 2D E5 46 C6 2B E4 46 C6 01 FE -- 00CE00
46 C6 20 EA 46 C6 20 E9 46 C6 20 E8 46 C6 2D E7 -- 00CE10
46 C6 59 E0 46 C6 4D DF 46 C6 43 DE 46 C6 20 EB -- 00CE20
F8 36 FF 2E 11 75 00 3D 83 F2 6E 3E C5 2E 42 E1 -- 00CE30
36 FF 2E 0F EB F2 F2 3E C5 2E F2 F6 36 FF 2E F2 -- 00CE40
F2 9A 35 FF F2 FA 3E C5 2E F2 F6 36 FF 2E F2 F8 -- 00CE50
04 74 00 3D 83 F2 2E 3E C5 2E 06 C4 83 00 14 EB -- 00CE60
F9 46 C6 00 03 F3 46 C7 70 F0 46 C6 74 E8 46 C6 -- 00CE70
```

66

```
03 7C 04 EE 7E 83 00 00 EE 46 C7 01 F6 46 C6 01 -- 00CE80
C6 01 F8 46 C6 00 F7 46 C6 02 F5 46 C6 01 93 E9 -- 00CE90

EC 7E 83 00 00 EC 46 C7 00 03 F1 46 C7 01 FA 46 -- 00CEA0
FB 46 89 00 1E 2D EC 46 03 5A 16 C5 8B 52 7D 0A -- 00CEB0
76 FF 50 F0 46 8D 16 0A 76 FF 0C 76 FF FD 56 89 -- 00CEC0
F2 A0 1E 8E 2E F2 9E 3E 03 2E E7 D1 EE 7E 8B EC -- 00CED0
3D BA 9A 03 6A 05 6A 35 FF F2 7A 3E C5 2E 35 FF -- 00CEE0
01 26 E9 03 74 00 3D 83 0A 7E C5 12 C4 83 00 64 -- 00CEF0
F8 46 C6 01 F7 46 C6 02 F5 46 C6 A8 EB EC 46 FF -- 00CF00
89 00 22 2D EE 46 03 5A 16 C5 8B 01 FA 46 C6 04 -- 00CF10
46 89 E0 D1 05 8B F2 36 3E C5 2E FD 56 89 FB 46 -- 00CF20
7E 8B 0A 6A 50 F0 46 8D 16 0A 76 FF 0C 76 FF F1 -- 00CF30
2E 35 FF F2 A0 1E 8E 2E F2 9E 3E 03 2E E7 D1 EE -- 00CF40
83 00 64 3D BA 9A 03 6A 05 6A 35 FF F2 7A 3E C5 -- 00CF50
F5 46 C6 00 B9 E9 03 74 00 3D 83 0A 7E C5 12 C4 -- 00CF60
8B 2E F2 F6 06 8B 2E 05 FA 46 C6 02 F8 46 C6 01 -- 00CF70
76 FF 00 05 F1 46 C7 FD 56 89 FB 46 89 F2 F8 16 -- 00CF80
03 2E E7 D1 EE 7E 8B 0B 6A 50 F0 46 8D 16 57 0C -- 00CF90
FF F2 7A 3E C5 2E 35 FF F2 A0 1E 8E 2E F2 9E 3E -- 00CFA0
0A 7E C5 12 C4 83 00 64 3D BA 9A 03 6A 05 6A 35 -- 00CFB0
2E 07 75 00 3D 83 F2 6E 3E C5 2E 61 75 00 3D 83 -- 00CFC0
7E 8B 05 DF 9B F2 FA 3E C5 2E 05 EB F2 F2 3E C5 -- 00CFD0
D9 9B F3 00 1E 8E 2E F2 FE 3E 03 2E 02 E7 C1 EE -- 00CFE0
04 16 8B 2E F3 02 06 03 2E 02 E0 C1 EE 46 8B 1D -- 00CFF0
F2 FE 3E 03 2E 02 E7 C1 EE 7E 8B 50 52 F3 01 FE -- 00D000
83 00 14 EA D9 9A 01 6A 00 5C ED 99 9A 05 D9 9B -- 00D010
C8 57 56 CB 5E 5F C9 9B FE 64 E9 EE 46 FF 0E C4 -- 00D020
FC 7E 83 00 00 FC 46 C7 00 00 FE 46 C7 00 00 0C -- 00D030
8E 2E F3 02 3E 03 2E 02 E7 C1 FC 7E 8B 2F 7D 04 -- 00D040
00 5C EE 14 9A 00 5C ED 99 9A 05 D9 9B F3 04 1E -- 00D050
FC 46 FF 05 88 FC 7E 03 F3 06 3E C5 2E 08 C4 83 -- 00D060
06 36 FF 2E F3 08 36 FF 2E 50 FE 46 8D 16 CB EB -- 00D070
01 97 68 06 6A F3 0A 36 FF 2E F3 0C 36 FF 2E F3 -- 00D080
00 6A 13 74 00 FE 7E 83 10 C4 83 00 64 40 D0 9A -- 00D090
C4 83 00 64 28 52 9A FE 76 FF 00 6A 00 6A 00 6A -- 00D0A0
05 C6 F3 12 3E C5 2E 05 05 C6 F3 0E 3E C5 2E 0A -- 00D0B0
05 C6 F3 1A 3E C5 2E 06 05 C6 F3 16 3E C5 2E 01 -- 00D0C0
14 9A 00 5C ED 99 9A 05 D9 9B F3 22 3E C5 2E 01 -- 00D0D0
3E C5 2E 05 89 F3 1E 3E C5 2E 08 C4 83 00 5C EE -- 00D0E0
83 00 5C EE 14 9A 00 5C ED 99 9A 05 D9 9B F3 2A -- 00D0F0
F4 5E DD 9B E8 D9 9B 05 89 F3 26 3E C5 2E 08 C4 -- 00D100
26 9B 04 45 D9 9B F3 22 3E C5 2E F3 22 36 C4 2E -- 00D110
00 5C EE 14 9A 00 5C ED 99 9A F4 46 DC 9B 24 D8 -- 00D120
5E DD 9B E8 D9 9B 05 89 F2 86 3E C5 2E 08 C4 83 -- 00D130
9B 04 45 D9 9B F3 2A 3E C5 2E F3 2A 36 C4 2E F4 -- 00D140
5C EE 14 9A 00 5C ED 99 9A F4 46 DC 9B 24 D8 26 -- 00D150
F2 8E 3E C5 2E 05 89 F2 8A 3E C5 2E 08 C4 83 00 -- 00D160
96 3E C5 2E 00 05 C6 F2 92 3E C5 2E 00 05 05 C7 -- 00D170
5E 3E C5 2E 00 05 C6 F2 9A 3E C5 2E 00 05 C6 F2 -- 00D180
8D 16 04 C4 83 00 14 C5 C1 9A 35 FF 02 75 FF F2 -- 00D190
36 FF 2E F2 86 36 FF 2E F2 88 36 FF 2E 50 FE 46 -- 00D1A0
35 FF F2 7A 3E C5 2E 10 6A F2 82 36 FF 2E F2 84 -- 00D1B0
00 FE 7E 83 14 C4 83 00 64 3D BA 9A 08 6A 06 6A -- 00D1C0
28 52 9A FE 76 FF 00 6A 00 6A 00 6A 00 6A 16 74 -- 00D1D0
01 05 C7 F2 76 3E C5 2E 00 A6 E9 0A C4 83 00 64 -- 00D1E0
F3 2E 36 FF 2E F3 30 36 FF 2E 50 FE 46 8D 16 00 -- 00D1F0
F2 7A 3E C5 2E 35 FF F2 82 3E C5 2E 00 6A 01 FE -- 00D200
7E 83 12 C4 83 00 64 3D BA 9A 02 6A 05 6A 35 FF -- 00D210
C4 83 00 14 C8 C7 9A 50 FE 46 8D 16 B0 75 00 FE -- 00D220
```

```
05 88 F3 52 3E C5 2E C0 2B 9D 75 00 FE 7E 83 04 -- 00D230
F3 4A 3E C5 2E E4 2A 05 88 F3 4E 3E C5 2E E4 2A -- 00D240
3E C5 2E E4 2A 05 88 F3 46 3E C5 2E E4 2A 05 88 -- 00D250
2E E4 2A 05 88 F3 3E 3E C5 2E E4 2A 05 88 F3 42 -- 00D260
2A 05 88 F3 36 3E C5 2E E4 2A 05 88 F3 3A 3E C5 -- 00D270
01 05 C6 F3 56 3E C5 2E 05 88 F3 32 3E C5 2E E4 -- 00D280
00 00 FE 46 C7 00 00 02 C8 57 56 CB 5E 5F C9 9B -- 00D290
8E 0A 7E 03 F8 8B 09 FE 46 6B 16 7D 05 FE 7E 83 -- 00D2A0
3E 36 C4 2E E4 EB FE 46 FF 05 88 FE 46 8B 0C 5E -- 00D2B0
ED 99 9A 24 DE 26 9B 05 D9 9B F3 5A 3E C5 2E F2 -- 00D2C0
01 45 89 0A 7E C5 08 C4 83 00 5C EE 14 9A 00 5C -- 00D2D0
26 9B 04 45 D9 9B F3 5A 3E C5 2E F2 3E 36 C4 2E -- 00D2E0
C5 08 C4 83 00 5C EE 14 9A 00 5C ED 99 9A 24 DE -- 00D2F0
9B F3 5E 3E C5 2E F2 4A 36 C4 2E 03 45 89 0A 7E -- 00D300
00 5C EE 14 9A 00 5C ED 99 9A 24 DE 26 9B 05 D9 -- 00D310
C5 2E F2 4A 36 C4 2E 05 45 89 0A 7E C5 08 C4 83 -- 00D320
00 5C ED 99 9A 24 DE 26 9B 04 45 D9 9B F3 5E 3E -- 00D330
C4 2E 07 45 89 0A 7E C5 08 C4 83 00 5C EE 14 9A -- 00D340
9A 24 DE 26 9B 05 D9 9B F3 62 3E C5 2E F2 3E 36 -- 00D350
89 0A 7E C5 08 C4 83 00 5C EE 14 9A 00 5C ED 99 -- 00D360
04 45 D9 9B F3 62 3E C5 2E F2 3E 36 C4 2E 0A 45 -- 00D370
C4 83 00 5C EE 14 9A 00 5C ED 99 9A 24 DE 26 9B -- 00D380
66 3E C5 2E F2 4A 36 C4 2E 0C 45 89 0A 7E C5 08 -- 00D390
EE 14 9A 00 5C ED 99 9A 24 DE 26 9B 05 D9 9B F3 -- 00D3A0
F2 4A 36 C4 2E 0E 45 89 0A 7E C5 08 C4 83 00 5C -- 00D3B0
ED 99 9A 24 DE 26 9B 04 45 D9 9B F3 66 3E C5 2E -- 00D3C0
10 45 89 0A 7E C5 08 C4 83 00 5C EE 14 9A 00 5C -- 00D3D0
DE 26 9B 05 D9 9B F3 6A 3E C5 2E F2 3E 36 C4 2E -- 00D3E0
7E C5 08 C4 83 00 5C EE 14 9A 00 5C ED 99 9A 24 -- 00D3F0
F3 6A 3E C5 2E F2 3E 36 C4 2E 13 45 89 0A 01 FE -- 00D400
EE 14 9A 00 5C ED 99 9A 24 DE 26 9B 04 45 D9 9B -- 00D410
F2 4A 36 C4 2E 15 45 89 0A 7E C5 08 C4 83 00 5C -- 00D420
5C ED 99 9A 24 DE 26 9B 05 D9 9B F3 6E 3E C5 2E -- 00D430
2E 17 45 89 0A 7E C5 08 C4 83 00 5C EE 14 9A 00 -- 00D440
DE 26 9B 04 45 D9 9B F3 6E 3E C5 2E F2 4A 36 C4 -- 00D450
7E C5 08 C4 83 00 5C EE 14 9A 00 5C ED 99 9A 24 -- 00D460
D9 9B F3 72 3E C5 2E F2 3E 36 C4 2E 19 45 89 0A -- 00D470
83 00 5C EE 14 9A 00 5C ED 99 9A 24 DE 26 9B 05 -- 00D480
3E C5 2E F2 3E 36 C4 2E 1C 45 89 0A 7E C5 08 C4 -- 00D490
9A 00 5C ED 99 9A 24 DE 26 9B 04 45 D9 9B F3 72 -- 00D4A0
36 C4 2E 1E 45 89 0A 7E C5 08 C4 83 00 5C EE 14 -- 00D4B0
99 9A 24 DE 26 9B 05 D9 9B F3 76 3E C5 2E F2 4A -- 00D4C0
45 89 0A 7E C5 08 C4 83 00 5C EE 14 9A 00 5C ED -- 00D4D0
9B 04 45 D9 9B F3 76 3E C5 2E F2 4A 36 C4 2E 20 -- 00D4E0
08 C4 83 00 5C EE 14 9A 00 5C ED 99 9A 24 DE 26 -- 00D4F0
F3 7A 3E C5 2E F2 3E 36 C4 2E 22 45 89 0A 7E C5 -- 00D500
5C EE 14 9A 00 5C ED 99 9A 24 DE 26 9B 05 D9 9B -- 00D510
2E F2 3E 36 C4 2E 25 45 89 0A 7E C5 08 C4 83 00 -- 00D520
5C ED 99 9A 24 DE 26 9B 04 45 D9 9B F3 7A 3E C5 -- 00D530
2E 27 45 89 0A 7E C5 08 C4 83 00 5C EE 14 9A 00 -- 00D540
24 DE 26 9B 05 D9 9B F3 7E 3E C5 2E F2 4A 36 C4 -- 00D550
0A 7E C5 08 C4 83 00 5C EE 14 9A 00 5C ED 99 9A -- 00D560
45 D9 9B F3 7E 3E C5 2E F2 4A 36 C4 2E 29 45 89 -- 00D570
83 00 5C EE 14 9A 00 5C ED 99 9A 24 DE 26 9B 04 -- 00D580
C8 57 56 CB 5E 5F C9 9B 2B 45 89 0A 7E C5 08 C4 -- 00D590
46 C6 65 7D 05 EE 7E 83 00 00 EE 46 C7 00 00 12 -- 00D5A0
00 F7 46 C6 00 00 F3 46 C7 00 00 F1 46 C7 70 F0 -- 00D5B0
05 F8 46 C6 05 F5 46 C6 01 F6 46 C6 01 F9 46 C6 -- 00D5C0
76 FF 00 00 FD 46 C7 00 00 FB 46 C7 00 FA 46 C6 -- 00D5D0
```

```
2E 3E C5 2E EE 76 FF 50 F0 46 8D 16 0A 76 FF 0C -- 00D5E0
BA 9A 03 6A 05 6A 35 FF F2 7A 3E C5 2E 35 FF F3 -- 00D5F0
05 75 00 3D 83 0A 7E C5 12 C4 83 00 64 3D 01 FE -- 00D600
C7 00 00 0C C8 57 56 CB 5E 5F C9 95 EB EE 46 FF -- 00D610
22 3E C5 2E 05 DF 9B F2 3E 3E C5 2E 00 00 FE 46 -- 00D620
22 3E C5 2E 05 DF 9B F2 46 3E C5 2E 1D D9 9B F3 -- 00D630
3E C5 2E 05 DF 9B F2 4A 3E C5 2E 04 5D D9 9B F3 -- 00D640
3E C5 2E 05 DF 9B F2 52 3E C5 2E 1D D9 9B F3 2A -- 00D650
7E 3E C5 2E F3 82 06 DF 2E 9B 04 5D D9 9B F3 2A -- 00D660
2E 9B 04 5D D9 9B F3 84 06 DF 2E 9B 1D D9 9B F3 -- 00D670
06 DF 2E 9B 1D D9 9B F3 7A 3E C5 2E F3 86 06 DF -- 00D680
C5 2E 05 D9 9B F3 22 3E C5 2E 04 5D D9 9B F3 88 -- 00D690
C5 2E 05 D9 9B F3 2A 3E C5 2E 1D D9 9B F3 5A 3E -- 00D6A0
2E 04 45 D9 9B F3 22 3E C5 2E 1D D9 9B F3 5E 3E -- 00D6B0
2E F4 5E DD 9B E8 D9 9B 04 5D D9 9B F3 5A 3E C5 -- 00D6C0
F3 5E 3E C5 2E F4 66 DC 9B 05 D9 9B F3 7E 3E C5 -- 00D6D0
62 3E C5 2E 05 D9 9B F3 22 3E C5 2E 04 5D D9 9B -- 00D6E0
F3 7E 3E C5 2E F4 5E DD 9B E8 D9 9B 1D D9 9B F3 -- 00D6F0
1D D9 9B F3 66 3E C5 2E F4 46 DC 9B 04 45 D9 9B -- 00D700
D9 9B F3 62 3E C5 2E 04 45 D9 9B F3 22 3E C5 2E -- 00D710
F3 66 3E C5 2E 04 45 D9 9B F3 2A 3E C5 2E 04 5D -- 00D720
6A 3E C5 2E 05 D9 9B F3 22 3E C5 2E 04 5D D9 9B -- 00D730
6E 3E C5 2E 05 D9 9B F3 7E 3E C5 2E 1D D9 9B F3 -- 00D740
F3 7A 3E C5 2E F4 5E DD 9B E8 D9 9B 1D D9 9B F3 -- 00D750
04 5D D9 9B F3 6A 3E C5 2E F4 66 DC 9B 05 D9 9B -- 00D760
D9 9B F3 6E 3E C5 2E 04 45 D9 9B F3 7E 3E C5 2E -- 00D770
D9 9B F3 7A 3E C5 2E F4 5E DD 9B E8 D9 9B 04 5D -- 00D780
C5 2E 1D D9 9B F3 72 3E C5 2E F4 46 DC 9B 04 45 -- 00D790
C5 2E 1D D9 9B F3 76 3E C5 2E 05 D9 9B F3 7E 3E -- 00D7A0
04 5D D9 9B F3 72 3E C5 2E 04 45 D9 9B F3 22 3E -- 00D7B0
D9 9B F3 76 3E C5 2E 04 45 D9 9B F3 7E 3E C5 2E -- 00D7C0
D0 9A 01 F5 68 03 6A 00 6A 50 FE 46 8D 16 04 5D -- 00D7D0
2E 04 27 E9 03 74 00 FE 7E 83 0A C4 83 00 64 40 -- 00D7E0
00 05 C7 F3 8A 3E C5 2E 00 00 05 C7 F2 6A 3E C5 -- 00D7F0
C3 5B 9A 24 75 00 3D 83 F2 72 3E C5 2E 00 01 FE -- 00D800
8E 36 FF 2E F3 90 36 FF 2E 50 FE 46 8D 16 00 14 -- 00D810
E1 E9 0C C4 83 00 64 40 D0 9A 01 F8 68 04 6A F3 -- 00D820
F3 92 3E C5 2E 0A 75 00 3D 83 F2 2A 3E C5 2E 03 -- 00D830
C5 2E E4 2A 05 8A F2 56 3E C5 2E 22 74 00 3D 83 -- 00D840
C5 2E E4 2A 05 8A F2 5A 3E C5 2E 05 88 F3 96 3E -- 00D850
2E 01 05 C6 F3 96 3E C5 2E 10 EB 05 88 F3 9A 3E -- 00D860
2E 01 05 C6 F3 9E 3E C5 2E 00 05 C6 F3 9A 3E C5 -- 00D870
74 00 3D 83 F2 2A 3E C5 2E 01 05 C6 F3 A2 3E C5 -- 00D880
F3 A6 3E C5 2E 08 EB 17 05 C6 F3 A6 3E C5 2E 0A -- 00D890
36 FF 2E F3 A8 36 FF 2E 50 FE 46 8D 16 12 05 C6 -- 00D8A0
0E C4 83 00 64 40 D0 9A 6E 6A 05 6A 01 6A F3 A6 -- 00D8B0
76 FF 00 6A 00 6A 00 6A 00 6A 13 74 00 FE 7E 83 -- 00D8C0
05 C7 F3 AA 3E C5 2E 0A C4 83 00 64 28 52 9A FE -- 00D8D0
50 FE 46 8D 16 00 00 05 C7 F3 AE 3E C5 2E 00 00 -- 00D8E0
40 D0 9A 01 FE 68 05 6A 00 6A 57 F3 B0 36 FF 2E -- 00D8F0
6A 00 6A 00 6A 13 74 00 FE 7E 83 0E C4 83 00 64 -- 00D900
C5 2E 0A C4 83 00 64 28 52 9A FE 76 FF 00 6A 00 -- 00D910
00 3D 83 F3 92 3E C5 2E 0D 75 00 3D 83 F2 2A 3E -- 00D920
2F 7D 04 FC 7E 83 00 00 FC 46 C7 01 3F E9 03 75 -- 00D930
F3 04 1E 8E 2E F3 02 3E 03 2E 02 E7 C1 FC 7E 8B -- 00D940
08 C4 83 00 5C EE 14 9A 00 5C ED 99 9A 05 D9 9B -- 00D950
16 CB EB FC 46 FF 05 88 FC 7E 03 F3 06 3E C5 2E -- 00D960
FF 2E F3 06 36 FF 2E F3 08 36 FF 2E 50 FE 46 8D -- 00D970
```

69

```
40 D0 9A 01 97 68 06 6A F3 0A 36 FF 2E F3 0C 36 -- 00D980
6A 00 6A 00 6A 13 74 00 FE 7E 83 10 C4 83 00 64 -- 00D990
C5 2E 0A C4 83 00 64 28 52 9A FE 76 FF 00 6A 00 -- 00D9A0
C6 F3 B2 3E C5 2E 0A 7D 00 FF 3D 05 8B F2 26 3E -- 00D9B0
B6 3E C5 2E FD 05 C6 F3 B2 3E C5 2E 08 EB 0F 05 -- 00D9C0
FE 46 8D 16 A0 02 45 C6 A0 01 45 C6 A0 05 C6 F3 -- 00D9D0
6A 00 6A 00 6A F3 B2 36 FF 2E F3 B4 36 FF 2E 50 -- 00D9E0
00 FE 7E 83 10 C4 83 00 64 40 D0 9A 01 32 68 06 -- 00D9F0
9A FE 76 FF 00 6A 00 6A 00 6A 00 6A 13 74 01 FE -- 00DA00
FF 3D 05 8B F2 26 3E C5 2E 0A C4 83 00 64 28 52 -- 00DA10
3E C5 2E 08 EB 0E 05 C6 F3 BA 3E C5 2E 0A 7D 00 -- 00DA20
B6 36 FF 2E F3 B8 36 FF 2E 03 6A FC 05 C6 F3 BA -- 00DA30
00 5C ED 6E 9A F3 BE 36 FF 2E F3 C0 36 FF 2E F3 -- 00DA40
36 FF 2E F3 BC 36 FF 2E 50 FE 46 8D 16 0A C4 83 -- 00DA50
00 64 40 D0 9A 01 32 68 06 6A 00 6A 00 6A F3 BA -- 00DA60
45 88 F3 C2 3E C5 2E 00 FF B8 00 81 E9 10 C4 83 -- 00DA70
2B 01 45 88 E4 2A 05 88 E4 2A 03 45 88 E4 2A 02 -- 00DA80
E4 2A 03 45 88 E4 2A 02 45 88 F3 C6 3E C5 2E C0 -- 00DA90
75 FF 00 6A 50 FE 46 8D 16 01 45 88 E4 2A 05 88 -- 00DAA0
0E C4 83 00 64 40 D0 9A 01 4C 68 05 6A 35 FF 02 -- 00DAB0
76 FF 00 6A 00 6A 00 6A 00 6A 13 74 00 FE 7E 83 -- 00DAC0
01 6A 50 FE 46 8D 16 0A C4 83 00 64 28 52 9A FE -- 00DAD0
9A 01 4C 68 05 6A 35 FF 02 75 FF F3 C6 3E C5 2E -- 00DAE0
6A 00 6A 13 74 00 FE 7E 83 0E C4 83 00 64 40 D0 -- 00DAF0
0A C4 83 00 64 28 52 9A FE 76 FF 00 6A 00 6A 00 -- 00DB00
2E F3 CA 36 FF 2E F3 CC 36 FF 2E 50 FE 46 8D 16 -- 00DB10
FF 2E F3 2C 36 FF 2E F3 9E 36 FF 2E F3 A0 36 FF -- 00DB20
6A 01 6A F3 22 36 FF 2E F3 24 36 FF 2E F3 2A 36 -- 00DB30
00 FE 7E 83 1A C4 83 00 64 40 D0 9A 00 CC 68 0B -- 00DB40
28 52 9A FE 76 FF 00 6A 00 6A 00 6A 00 6A 13 74 -- 00DB50
2E F3 90 36 FF 2E 50 FE 46 8D 16 0A C4 83 00 64 -- 00DB60
01 6A F3 CE 36 FF 2E F3 D0 36 FF 2E F3 8E 36 FF -- 00DB70
FE 7E 83 12 C4 83 00 64 40 D0 9A 02 CA 68 07 6A -- 00DB80
52 9A FE 76 FF 00 6A 00 6A 00 6A 00 6A 13 74 00 -- 00DB90
F3 90 36 FF 2E 50 FE 46 8D 16 0A C4 83 00 64 28 -- 00DBA0
83 00 64 40 D0 9A 01 F8 68 04 6A F3 8E 36 FF 2E -- 00DBB0
00 6A 00 6A 00 6A 00 6A 13 74 00 FE 7E 83 0C C4 -- 00DBC0
F2 2A 3E C5 2E 0A C4 83 00 64 28 52 9A FE 76 FF -- 00DBD0
2E 08 EB 16 05 C6 F3 A6 3E C5 2E 0A 74 00 3D 83 -- 00DBE0
A8 36 FF 2E 50 FE 46 8D 16 13 05 C6 F3 A6 3E C5 -- 00DBF0
D0 9A 6E 6A 05 6A 01 6A F3 A6 36 FF 2E F3 01 FE -- 00DC00
00 6A 00 6A 13 74 00 FE 7E 83 0E C4 83 00 64 40 -- 00DC10
9B 0A C4 83 00 64 28 52 9A FE 76 FF 00 6A 00 6A -- 00DC20
2E 00 00 FE 46 C7 00 00 04 C8 57 56 CB 5E 5F C9 -- 00DC30
3D 83 F3 92 3E C5 2E 17 75 00 3D 83 F2 2A 3E C5 -- 00DC40
02 1C E9 03 74 00 3D 83 F2 72 3E C5 2E 0D 75 00 -- 00DC50
E7 C1 FC 7E 8B 2F 7D 04 FC 7E 83 00 00 FC 46 C7 -- 00DC60
99 9A 05 D9 9B F3 04 1E 8E 2E F3 02 3E 03 2E 02 -- 00DC70
F3 06 3E C5 2E 08 C4 83 00 5C EE 14 9A 00 5C ED -- 00DC80
2E 50 FE 46 8D 16 CB EB FC 46 FF 05 88 FC 7E 03 -- 00DC90
FF 2E F3 0C 36 FF 2E F3 06 36 FF 2E F3 08 36 FF -- 00DCA0
10 C4 83 00 64 40 D0 9A 01 97 68 06 6A F3 0A 36 -- 00DCB0
76 FF 00 6A 00 6A 00 6A 00 6A 13 74 00 FE 7E 83 -- 00DCC0
7E 83 00 00 FC 46 C7 0A C4 83 00 64 28 52 9A FE -- 00DCD0
2E F3 D2 3E 03 2E 02 E7 C1 FC 7E 8B 2F 7D 04 FC -- 00DCE0
5C EE 14 9A 00 5C ED 99 9A 05 D9 9B F3 D4 1E 8E -- 00DCF0
46 FF 05 88 FC 7E 03 F3 06 3E C5 2E 08 C4 83 00 -- 00DD00
36 FF 2E F3 08 36 FF 2E 50 FE 46 8D 16 CB EB FC -- 00DD10

97 68 06 6A F3 D6 36 FF 2E F3 D8 36 FF 2E F3 06 -- 00DD20
```

70

```
6A 13 74 00 FE 7E 83 10 C4 83 00 64 40 D0 9A 01 -- 00DD30
83 00 64 28 52 9A FE 76 FF 00 6A 00 6A 00 6A 00 -- 00DD40
2E 00 B4 E9 03 74 00 3D 83 F2 72 3E C5 2E 0A C4 -- 00DD50
2E 05 88 F3 DA 3E C5 2E E4 2A 05 8A F3 0A 3E C5 -- 00DD60
05 88 F3 DE 3E C5 2E E4 2A 01 45 8A F3 0A 3E C5 -- 00DD70
88 F3 E2 3E C5 2E E4 2A 02 45 8A F3 0A 3E C5 2E -- 00DD80
F3 0E 36 FF 2E F3 10 36 FF 2E 50 FE 46 8D 16 05 -- 00DD90
83 0E C4 83 00 64 40 D0 9A 01 5B 68 05 6A 01 6A -- 00DDA0
FE 76 FF 00 6A 00 6A 00 6A 00 6A 13 74 00 FE 7E -- 00DDB0
2A 05 8A F3 D6 3E C5 2E 0A C4 83 00 64 28 52 9A -- 00DDC0
01 45 8A F3 D6 3E C5 2E 05 88 F3 E6 3E C5 2E E4 -- 00DDD0
45 8A F3 D6 3E C5 2E 05 88 F3 EA 3E C5 2E E4 2A -- 00DDE0
2E 50 FE 46 8D 16 05 88 F3 EE 3E C5 2E E4 2A 02 -- 00DDF0
68 05 6A 01 6A F3 16 36 FF 2E F3 18 36 FF 01 FE -- 00DE00
E9 03 75 00 3D 83 F2 6A 3E C5 2E 01 AC E9 01 5B -- 00DE10
56 36 FF 2E F2 58 36 FF 2E 50 FE 46 8D 16 01 C0 -- 00DE20
83 00 64 40 D0 9A 01 32 68 06 6A 00 6A 00 6A F2 -- 00DE30
00 6A 00 6A 00 6A 00 6A 13 74 00 FE 7E 83 10 C4 -- 00DE40
50 FE 46 8D 16 0A C4 83 00 64 28 52 9A FE 76 FF -- 00DE50
06 6A 00 6A 00 6A F2 5A 36 FF 2E F2 5C 36 FF 2E -- 00DE60
C5 2E 01 4B E9 10 C4 83 00 64 40 D0 9A 01 32 68 -- 00DE70
00 5C EE 14 9A 00 5C ED 99 9A 05 D9 9B F3 02 3E -- 00DE80
F3 02 3E C5 2E 01 45 88 F3 C2 3E C5 2E 08 C4 83 -- 00DE90
C4 83 00 5C EE 14 9A 00 5C ED 99 9A 04 45 D9 9B -- 00DEA0
45 D9 9B F3 02 3E C5 2E 05 88 F3 C2 3E C5 2E 08 -- 00DEB0
C5 2E 08 C4 83 00 5C EE 14 9A 00 5C ED 99 9A 08 -- 00DEC0
9A 0C 45 D9 9B F3 02 3E C5 2E 03 45 88 F3 C2 3E -- 00DED0
C2 3E C5 2E 08 C4 83 00 5C EE 14 9A 00 5C ED 99 -- 00DEE0
5C ED 99 9A 05 D9 9B F3 D2 3E C5 2E 02 45 88 F3 -- 00DEF0
45 88 F3 F2 3E C5 2E 08 C4 83 00 5C EE 14 9A 00 -- 00DF00
9A 00 5C ED 99 9A 04 45 D9 9B F3 D2 3E C5 2E 01 -- 00DF10
C5 2E 05 88 F3 F2 3E C5 2E 08 C4 83 00 5C EE 14 -- 00DF20
5C EE 14 9A 00 5C ED 99 9A 08 45 D9 9B F3 D2 3E -- 00DF30
D2 3E C5 2E 03 45 88 F3 F2 3E C5 2E 08 C4 83 00 -- 00DF40
83 00 5C EE 14 9A 00 5C ED 99 9A 0C 45 D9 9B F3 -- 00DF50
83 F2 6A 3E C5 2E 02 45 88 F3 F2 3E C5 2E 08 C4 -- 00DF60
F3 F2 3E C5 2E 00 6A 50 FE 46 8D 16 6E 74 00 3D -- 00DF70
83 00 64 40 D0 9A 01 4C 68 05 6A 35 FF 02 75 FF -- 00DF80
00 6A 00 6A 00 6A 00 6A 13 74 00 FE 7E 83 0E C4 -- 00DF90
50 FE 46 8D 16 0A C4 83 00 64 28 52 9A FE 76 FF -- 00DFA0
4C 68 05 6A 35 FF 02 75 FF F3 C2 3E C5 2E 01 6A -- 00DFB0
6A 13 74 00 FE 7E 83 0E C4 83 00 64 40 D0 9A 01 -- 00DFC0
83 00 64 28 52 9A FE 76 FF 00 6A 00 6A 00 6A 00 -- 00DFD0
04 C8 57 56 CB 5E 5F C9 9B 00 14 DD BA 9A 0A C4 -- 00DFE0
00 01 05 C7 F3 8A 3E C5 2E 00 00 FE 46 C7 00 00 -- 00DFF0
FF 2E F3 0A 36 FF 2E F3 0C 36 FF 2E 03 6A 01 FE -- 00E000
0A C4 83 00 5C ED 6E 9A F3 D6 36 FF 2E F3 D8 36 -- 00E010
3E C5 2E 00 B2 E9 03 74 00 3D 83 F2 72 3E C5 2E -- 00E020
54 7D 04 FC 7E 83 00 00 FC 46 C7 06 05 C6 F3 F6 -- 00E030
2E F3 FA 36 FF 2E F3 FC 36 FF 2E 50 FE 46 8D 16 -- 00E040
2E 3E C5 2E FC 76 FF F3 32 36 FF 2E F3 34 36 FF -- 00E050
BA 9A 04 6A 07 6A 35 FF F2 7A 3E C5 2E 35 FF F3 -- 00E060
00 6A 00 6A 13 74 00 FE 7E 83 16 C4 83 00 64 3D -- 00E070
FF 0A C4 83 00 64 28 52 9A FE 76 FF 00 6A 00 6A -- 00E080
3E C5 2E E4 2A 05 8A F3 D6 3E C5 2E A6 EB FC 46 -- 00E090
C5 2E E4 2A 01 45 8A F3 D6 3E C5 2E 05 88 F3 E6 -- 00E0A0
2E E4 2A 02 45 8A F3 D6 3E C5 2E 05 88 F3 EA 3E -- 00E0B0

F3 18 36 FF 2E 50 FE 46 8D 16 05 88 F3 EE 3E C5 -- 00E0C0
16 03 85 E9 01 5B 68 05 6A 01 6A F3 16 36 FF 2E -- 00E0D0
```

71

```
00 64 40 DO 9A 01 F6 68 03 6A 00 6A 50 FE 46 8D  --  00E0E0
6A 00 6A 00 6A 00 6A 13 74 00 FE 7E 83 0A C4 83  --  00E0F0
FE 46 8D 16 0A C4 83 00 64 28 52 9A FE 76 FF 00  --  00E100
0A C4 83 00 64 40 DO 9A 01 F5 68 03 6A 00 6A 50  --  00E110
76 FF 00 6A 00 6A 00 6A 00 6A 13 74 00 FE 7E 83  --  00E120
3D 83 F2 2A 3E C5 2E 0A C4 83 00 64 28 52 9A FE  --  00E130
3E C5 2E 2F 74 00 3D 83 F3 92 3E C5 2E 0A 75 00  --  00E140
2E 50 FE 46 8D 16 00 A9 E9 03 75 00 3D 83 F2 6A  --  00E150
68 06 6A 00 6A 00 6A F2 5A 36 FF 2E F2 5C 36 FF  --  00E160
C2 3E C5 2E 6E EB 10 C4 83 00 64 40 DO 9A 01 32  --  00E170
C5 2E 01 45 88 F3 F2 3E C5 2E E4 2A 01 45 8A F3  --  00E180
C5 2E 05 88 F3 F2 3E C5 2E E4 2A 05 8A F3 C2 3E  --  00E190
03 45 88 F3 F2 3E C5 2E E4 2A 03 45 8A F3 C2 3E  --  00E1A0
88 F3 F2 3E C5 2E E4 2A 02 45 8A F3 C2 3E C5 2E  --  00E1B0
FE 46 8D 16 37 74 00 3D 83 F2 6A 3E C5 2E 02 45  --  00E1C0
68 05 6A 35 FF 02 75 FF F3 F2 3E C5 2E 00 6A 50  --  00E1D0
13 74 00 FE 7E 83 0E C4 83 00 64 40 DO 9A 01 4C  --  00E1E0
00 64 28 52 9A FE 76 FF 00 6A 00 6A 00 6A 00 6A  --  00E1F0
2E 0A 74 00 3D 83 F2 2A 3E C5 2E 0A C4 83 01 FE  --  00E200
05 C6 F3 A6 3E C5 2E 08 EB 17 05 C6 F3 A6 3E C5  --  00E210
F3 A6 36 FF 2E F3 A8 36 FF 2E 50 FE 46 8D 16 12  --  00E220
7E 83 0E C4 83 00 64 40 DO 9A 6E 6A 05 6A 01 6A  --  00E230
9A FE 76 FF 00 6A 00 6A 00 6A 00 6A 13 74 00 FE  --  00E240
CC 36 FF 2E 50 FE 46 8D 16 0A C4 83 00 64 28 52  --  00E250
F3 9E 36 FF 2E F3 A0 36 FF 2E F3 CA 36 FF 2E F3  --  00E260
2E F3 7C 36 FF 2E F3 7E 36 FF 2E F3 80 36 FF 2E  --  00E270
00 64 40 DO 9A 00 CC 68 0B 6A 01 6A F3 7A 36 FF  --  00E280
6A 00 6A 00 6A 00 6A 13 74 00 FE 7E 83 1A C4 83  --  00E290
FE 46 8D 16 0A C4 83 00 64 28 52 9A FE 76 FF 00  --  00E2A0
F3 A4 36 FF 2E F3 CA 36 FF 2E F3 CC 36 FF 2E 50  --  00E2B0
2E F3 5E 36 FF 2E F3 60 36 FF 2E F3 A2 36 FF 2E  --  00E2C0
00 CC 68 0B 6A 01 6A F3 5A 36 FF 2E F3 5C 36 FF  --  00E2D0
00 6A 13 74 00 FE 7E 83 1A C4 83 00 64 40 DO 9A  --  00E2E0
C4 83 00 64 28 52 9A FE 76 FF 00 6A 00 6A 00 6A  --  00E2F0
F3 CA 36 FF 2E F3 CC 36 FF 2E 50 FE 46 8D 16 0A  --  00E300
2E F3 68 36 FF 2E F3 A2 36 FF 2E F3 A4 36 FF 2E  --  00E310
01 6A F3 62 36 FF 2E F3 64 36 FF 2E F3 66 36 FF  --  00E320
FE 7E 83 1A C4 83 00 64 40 DO 9A 00 CC 68 0B 6A  --  00E330
52 9A FE 76 FF 00 6A 00 6A 00 6A 00 6A 13 74 00  --  00E340
F3 CC 36 FF 2E 50 FE 46 8D 16 0A C4 83 00 64 28  --  00E350
2E F3 A2 36 FF 2E F3 A4 36 FF 2E F3 CA 36 FF 2E  --  00E360
FF 2E F3 6C 36 FF 2E F3 6E 36 FF 2E F3 70 36 FF  --  00E370
83 00 64 40 DO 9A 00 CC 68 0B 6A 01 6A F3 6A 36  --  00E380
00 6A 00 6A 00 6A 00 6A 13 74 00 FE 7E 83 1A C4  --  00E390
50 FE 46 8D 16 0A C4 83 00 64 28 52 9A FE 76 FF  --  00E3A0
2E F3 A4 36 FF 2E F3 CA 36 FF 2E F3 CC 36 FF 2E  --  00E3B0
FF 2E F3 76 36 FF 2E F3 78 36 FF 2E F3 A2 36 FF  --  00E3C0
9A 00 CC 68 0B 6A 01 6A F3 72 36 FF 2E F3 74 36  --  00E3D0
6A 00 6A 13 74 00 FE 7E 83 1A C4 83 00 64 40 DO  --  00E3E0
0A C4 83 00 64 28 52 9A FE 76 FF 00 6A 00 6A 00  --  00E3F0
8E 36 FF 2E F3 90 36 FF 2E 50 FE 46 8D 16 01 FE  --  00E400
7E 83 0C C4 83 00 64 40 DO 9A 01 F8 68 04 6A F3  --  00E410
9A FE 76 FF 00 6A 00 6A 00 6A 00 6A 13 74 00 FE  --  00E420
74 00 3D 83 F2 2A 3E C5 2E 0A C4 83 00 64 28 52  --  00E430
F3 A6 3E C5 2E 08 EB 16 05 C6 F3 A6 3E C5 2E 0A  --  00E440
36 FF 2E F3 A8 36 FF 2E 50 FE 46 8D 16 13 05 C6  --  00E450

0E C4 83 00 64 40 DO 9A 6E 6A 05 6A 01 6A F3 A6  --  00E460
76 FF 00 6A 00 6A 00 6A 00 6A 13 74 00 FE 7E 83  --  00E470
C8 57 56 CB 5E 5F C9 0A C4 83 00 64 28 52 9A FE  --  00E480
```

72

```
00 05 C7 F3 8A 3E C5 2E 00 00 FE 46 C7 00 00 04 -- 00E490
F3 F6 3E C5 2E 6A 75 00 3D 83 F2 72 3E C5 2E 00 -- 00E4A0
CA E9 03 7C 04 FC 7E 83 00 00 FC 46 C7 05 05 C6 -- 00E4B0
F3 FA 36 FF 2E F3 FC 36 FF 2E 50 FE 46 8D 16 02 -- 00E4C0
3E C5 2E FC 76 FF F3 32 36 FF 2E F3 34 36 FF 2E -- 00E4D0
9A 04 6A 07 6A 35 FF F2 7A 3E C5 2E 35 FF F3 2E -- 00E4E0
6A 00 6A 13 74 00 FE 7E 83 16 C4 83 00 64 3D BA -- 00E4F0
0A C4 83 00 64 28 52 9A FE 76 FF 00 6A 00 6A 00 -- 00E500
F6 68 03 6A 00 6A 50 FE 46 8D 16 A3 EB FC 46 FF -- 00E510
6A 13 74 00 FE 7E 83 0A C4 83 00 64 40 D0 9A 01 -- 00E520
83 00 64 28 52 9A FE 76 FF 00 6A 00 6A 00 6A 00 -- 00E530
D0 9A 01 F5 68 03 6A 00 6A 50 FE 46 8D 16 0A C4 -- 00E540
00 6A 00 6A 13 74 00 FE 7E 83 0A C4 83 00 64 40 -- 00E550
2E 0A C4 83 00 64 28 52 9A FE 76 FF 00 6A 00 6A -- 00E560
3D 83 F3 92 3E C5 2E 0A 75 00 3D 83 F2 2A 3E C5 -- 00E570
46 8D 16 63 74 00 3D 83 F3 8A 3E C5 2E 2C 74 00 -- 00E580
00 6A 00 6A F3 BA 36 FF 2E F3 BC 36 FF 2E 50 FE -- 00E590
2E 28 EB 10 C4 83 00 64 40 D0 9A 01 32 68 06 6A -- 00E5A0
00 6A 50 FE 46 8D 16 37 74 00 3D 83 F3 8A 3E C5 -- 00E5B0
9A 01 4C 68 05 6A 35 FF 02 75 FF F3 C6 3E C5 2E -- 00E5C0
6A 00 6A 13 74 00 FE 7E 83 0E C4 83 00 64 40 D0 -- 00E5D0
0A C4 83 00 64 28 52 9A FE 76 FF 00 6A 00 6A 00 -- 00E5E0
C6 F3 A6 3E C5 2E 0A 74 00 3D 83 F2 2A 3E C5 2E -- 00E5F0
8D 16 12 05 C6 F3 A6 3E C5 2E 08 EB 17 05 01 FE -- 00E600
6A 01 6A F3 A6 36 FF 2E F3 A8 36 FF 2E 50 FE 46 -- 00E610
74 00 FE 7E 83 0E C4 83 00 64 40 D0 9A 6E 6A 05 -- 00E620
64 28 52 9A FE 76 FF 00 6A 00 6A 00 6A 00 6A 13 -- 00E630
FF 2E F3 CC 36 FF 2E 50 FE 46 8D 16 0A C4 83 00 -- 00E640
36 FF 2E F3 9E 36 FF 2E F3 A0 36 FF 2E F3 CA 36 -- 00E650
22 36 FF 2E F3 24 36 FF 2E F3 2A 36 FF 2E F3 2C -- 00E660
1A C4 83 00 64 40 D0 9A 00 CC 68 0B 6A 01 6A F3 -- 00E670
76 FF 00 6A 00 6A 00 6A 00 6A 13 74 00 FE 7E 83 -- 00E680
FF 2E 50 FE 46 8D 16 0A C4 83 00 64 28 52 9A FE -- 00E690
40 D0 9A 01 F8 68 04 6A F3 8E 36 FF 2E F3 90 36 -- 00E6A0
6A 00 6A 00 6A 13 74 00 FE 7E 83 0C C4 83 00 64 -- 00E6B0
C5 2E 0A C4 83 00 64 28 52 9A FE 76 FF 00 6A 00 -- 00E6C0
16 05 C6 F3 A6 3E C5 2E 0A 74 00 3D 83 F2 2A 3E -- 00E6D0
2E 50 FE 46 8D 16 13 05 C6 F3 A6 3E C5 2E 08 EB -- 00E6E0
9A 6E 6A 05 6A 01 6A F3 A6 36 FF 2E F3 A8 36 FF -- 00E6F0
6A 00 6A 13 74 00 FE 7E 83 0E C4 83 00 64 40 D0 -- 00E700
0A C4 83 00 64 28 52 9A FE 76 FF 00 6A 00 6A 00 -- 00E710
83 F3 92 3E C5 2E 0A 75 00 3D 83 F2 2A 3E C5 2E -- 00E720
FF 2E F3 BC 36 FF 2E 50 FE 46 8D 16 22 74 00 3D -- 00E730
64 40 D0 9A 01 32 68 06 6A 00 6A 00 6A F3 BA 36 -- 00E740
3E C5 2E 00 6A 50 FE 46 8D 16 1E EB 10 C4 83 00 -- 00E750
64 40 D0 9A 01 4C 68 05 6A 35 FF 02 75 FF F3 C6 -- 00E760
00 6A 00 6A 00 6A 13 74 00 FE 7E 83 0E C4 83 00 -- 00E770
5E 5F C9 0A C4 83 00 64 28 52 9A FE 76 FF 00 6A -- 00E780
00 FC 46 C7 00 00 FE 46 C7 00 00 12 C8 57 56 CB -- 00E790
C5 2E 00 9A E9 03 74 00 3D 83 F2 6A 3E C5 2E 00 -- 00E7A0
89 05 8B F2 4E 3E C5 2E EE 46 89 05 8B F2 42 3E -- 00E7B0
FE 7E 83 48 7D 04 FA 7E 83 00 00 FA 46 C7 F0 46 -- 00E7C0
6A 00 6A 50 EE 46 8D 16 50 FE 46 8D 16 42 75 00 -- 00E7D0
F2 A0 1E 8E 2E F2 9E 3E 03 2E E7 D1 FA 7E 8B 00 -- 00E7E0
3D BA 9A 06 6A 06 6A 35 FF F2 7A 3E C5 2E 35 FF -- 00E7F0

01 05 05 6B F2 36 3E C5 2E 14 C4 83 00 64 01 FE -- 00E800
6A 00 6A 13 74 00 FE 7E 83 B2 EB FA 46 FF EE 46 -- 00E810
0A C4 83 00 64 28 52 9A FE 76 FF 00 6A 00 6A 00 -- 00E820
14 DB 64 9A 05 74 00 03 3D 05 8B F2 6E 3E C5 2E -- 00E830
```

73

EP 0 533 348 A2

```
57 56 CB 5E 5F C9 00 01 05 C7 F2 6A 3E C5 2E 00 -- 00E840
C5 2E 00 00 FC 46 C7 00 00 FE 46 C7 00 00 04 C8 -- 00E850
F2 6A 3E C5 2E 00 A6 E9 03 74 00 3D 83 F2 72 3E -- 00E860
2A 05 8A F3 0A 3E C5 2E 02 28 E9 03 74 00 3D 83 -- 00E870
01 45 8A F3 0A 3E C5 2E 05 88 F3 DA 3E C5 2E E4 -- 00E880
45 8A F3 0A 3E C5 2E 05 88 F3 DE 3E C5 2E E4 2A -- 00E890
2E 50 FE 46 8D 16 05 88 F3 E2 3E C5 2E E4 2A 02 -- 00E8A0
01 5B 68 05 6A 01 6A F3 0E 36 FF 2E F3 10 36 FF -- 00E8B0
00 6A 13 74 00 FE 7E 83 0E C4 83 00 64 40 D0 9A -- 00E8C0
C4 83 00 64 28 52 9A FE 76 FF 00 6A 00 6A 00 6A -- 00E8D0
F3 1E 36 FF 2E F3 20 36 FF 2E 50 FE 46 8D 16 0A -- 00E8E0
F2 7A 3E C5 2E 35 FF F3 2E 3E C5 2E 00 6A 00 6A -- 00E8F0
76 E9 14 C4 83 00 64 3D BA 9A 06 6A 06 6A 35 FF -- 00E900
2E 50 FE 46 8D 16 00 01 05 C7 F3 AE 3E C5 2E 01 -- 00E910
40 D0 9A 01 FE 68 05 6A FC 76 FF 57 F3 B0 36 FF -- 00E920
6A 00 6A 00 6A 13 74 00 FE 7E 83 0E C4 83 00 64 -- 00E930
C5 2E 0A C4 83 00 64 28 52 9A FE 76 FF 00 6A 00 -- 00E940
00 3D 83 F3 92 3E C5 2E 0D 75 00 3D 83 F2 2A 3E -- 00E950
F7 68 03 6A 00 6A 50 FE 46 8D 16 00 96 E9 03 75 -- 00E960
6A 13 74 00 FE 7E 83 0A C4 83 00 64 40 D0 9A 01 -- 00E970
83 00 64 28 52 9A FE 76 FF 00 6A 00 6A 00 6A 00 -- 00E980
56 36 FF 2E F2 58 36 FF 2E 50 FE 46 8D 16 0A C4 -- 00E990
83 00 64 40 D0 9A 01 32 68 06 6A 00 6A 00 6A F2 -- 00E9A0
00 6A 00 6A 00 6A 00 6A 13 74 00 FE 7E 83 10 C4 -- 00E9B0
F3 8A 3E C5 2E 0A C4 83 00 64 28 52 9A FE 76 FF -- 00E9C0
36 FF 2E 50 FE 46 8D 16 00 C8 E9 03 75 00 3D 83 -- 00E9D0
01 32 68 06 6A 00 6A 00 6A F2 5A 36 FF 2E F2 5C -- 00E9E0
F3 8A 3E C5 2E 00 8C E9 10 C4 83 00 64 40 D0 9A -- 00E9F0
C5 2E 00 6A 50 FE 46 8D 16 37 74 00 3D 83 01 FE -- 00EA00
40 D0 9A 01 4C 68 05 6A 35 FF 02 75 FF F3 F2 3E -- 00EA10
6A 00 6A 00 6A 13 74 00 FE 7E 83 0E C4 83 00 64 -- 00EA20
8D 16 0A C4 83 00 64 28 52 9A FE 76 FF 00 6A 00 -- 00EA30
6A 35 FF 02 75 FF F3 C2 3E C5 2E 01 6A 50 FE 46 -- 00EA40
00 FE 7E 83 0E C4 83 00 64 40 D0 9A 01 4C 68 05 -- 00EA50
28 52 9A FE 76 FF 00 6A 00 6A 00 6A 00 6A 13 74 -- 00EA60
F7 68 03 6A 00 6A 50 FE 46 8D 16 0A C4 83 00 64 -- 00EA70
6A 13 74 00 FE 7E 83 0A C4 83 00 64 40 D0 9A 01 -- 00EA80
83 00 64 28 52 9A FE 76 FF 00 6A 00 6A 00 6A 00 -- 00EA90
00 FC 46 C7 00 00 04 C8 57 56 CB 5E 5F C9 0A C4 -- 00EAA0
2E 01 A8 E9 03 7C 04 FE 7E 83 00 00 FE 46 C7 00 -- 00EAB0
E7 C1 FE 7E 8B 28 75 00 03 3D 05 8B F2 6E 3E C5 -- 00EAC0
7E 8B 05 D9 9B F3 04 1E 8E 2E F3 02 3E 03 2E 02 -- 00EAD0
D9 9B F3 00 1E 8E 2E F2 FE 3E 03 2E 02 E7 C1 FE -- 00EAE0
8B 2E F2 FE 06 03 2E 02 E0 C1 FE 46 8B 34 EB 1D -- 00EAF0
F3 02 3E 03 2E 02 E7 C1 FE 7E 8B 50 52 F3 00 16 -- 00EB00
9A 00 6A 00 5C ED 99 9A 05 D9 9B F3 04 1E 8E 2E -- 00EB10
80 FE 7E 03 F3 FE 3E C5 2E 0E C4 83 00 14 EA D9 -- 00EB20
06 3E C5 2E 01 05 C6 F4 02 3E C5 2E 12 75 00 3D -- 00EB30
10 74 00 3D 83 F2 2E 3E C5 2E 1A EB 02 05 C6 F4 -- 00EB40
01 05 C6 F4 06 3E C5 2E 02 05 C6 F4 02 3E C5 2E -- 00EB50
02 E7 C1 FE 7E 8B F2 F6 36 FF 2E F2 F8 36 FF 2E -- 00EB60
ED 99 9A 05 D9 9B F3 00 1E 8E 2E F2 FE 3E 03 2E -- 00EB70
00 14 EB F2 9A 50 08 C4 83 00 5C ED F9 9A 00 5C -- 00EB80
3E C5 2E F2 F8 16 8B 2E F2 F6 06 8B 2E 06 C4 83 -- 00EB90

10 36 FF 2E 50 FC 46 8D 16 02 55 89 05 89 F4 0A -- 00EBA0
F2 A2 36 FF 2E F2 A4 36 FF 2E F4 0E 36 FF 2E F4 -- 00EBB0
A0 1E 8E 2E F2 9E 3E 03 2E E7 D1 FE 7E 8B 0B 6A -- 00EBC0
BA 9A 04 6A 07 6A 35 FF F2 7A 3E C5 2E 35 FF F2 -- 00EBD0
00 6A 00 6A 13 74 00 FC 7E 83 16 C4 83 00 64 3D -- 00EBE0
```

74

```
2E 0A C4 83 00 64 28 52 9A FC 76 FF 00 6A 00 6A -- 00EBF0
50 FC 46 8D 16 58 74 00 3D 83 F2 2E 3E C5 01 FE -- 00EC00
2E F2 CC 36 FF 2E F4 12 36 FF 2E F4 14 36 FF 2E -- 00EC10
F2 9E 3E 03 2E E7 D1 FE 7E 8B 06 6A F2 CA 36 FF -- 00EC20
07 6A 35 FF F2 7A 3E C5 2E 35 FF F2 A0 1E 8E 2E -- 00EC30
13 74 00 FC 7E 83 16 C4 83 00 64 3D BA 9A 04 6A -- 00EC40
00 64 28 52 9A FC 76 FF 00 6A 00 6A 00 6A 00 6A -- 00EC50
05 8B F2 6E 3E C5 2E FE 4F E9 FE 46 FF 0A C4 83 -- 00EC60
00 3D 83 F2 6A 3E C5 2E 01 76 E9 03 75 00 03 3D -- 00EC70
2E 53 75 00 3D 83 F2 72 3E C5 2E 01 69 E9 03 75 -- 00EC80
2E 05 88 F3 DA 3E C5 2E E4 2A 05 8A F3 0A 3E C5 -- 00EC90
05 88 F3 DE 3E C5 2E E4 2A 01 45 8A F3 0A 3E C5 -- 00ECA0
88 F3 E2 3E C5 2E E4 2A 02 45 8A F3 0A 3E C5 2E -- 00ECB0
F3 0E 36 FF 2E F3 10 36 FF 2E 50 FC 46 8D 16 05 -- 00ECC0
E9 0E C4 83 00 64 40 D0 9A 01 5B 68 05 6A 01 6A -- 00ECD0
92 3E C5 2E 0A 75 00 3D 83 F2 2A 3E C5 2E 00 F3 -- 00ECE0
F2 58 36 FF 2E 50 FC 46 8D 16 23 74 00 3D 83 F3 -- 00ECF0
D0 9A 01 32 68 06 6A 00 6A 00 6A F2 56 36 FF 2E -- 00ED00
D9 9B F3 02 3E C5 2E 00 BC E9 10 C4 83 00 64 40 -- 00ED10
C5 2E 08 C4 83 00 5C EE 14 9A 00 5C ED 99 9A 05 -- 00ED20
9A 04 45 D9 9B F3 02 3E C5 2E 01 45 88 F3 C2 3E -- 00ED30
C2 3E C5 2E 08 C4 83 00 5C EE 14 9A 00 5C ED 99 -- 00ED40
5C ED 99 9A 08 45 D9 9B F3 02 3E C5 2E 05 88 F3 -- 00ED50
45 88 F3 C2 3E C5 2E 08 C4 83 00 5C EE 14 9A 00 -- 00ED60
9A 00 5C ED 99 9A 0C 45 D9 9B F3 02 3E C5 2E 03 -- 00ED70
16 02 45 88 F3 C2 3E C5 2E 08 C4 83 00 5C EE 14 -- 00ED80
01 4C 68 05 6A 35 FF 02 75 FF 01 6A 50 FC 46 8D -- 00ED90
00 6A 13 74 00 FC 7E 83 0E C4 83 00 64 40 D0 9A -- 00EDA0
C4 83 00 64 28 52 9A FC 76 FF 00 6A 00 6A 00 6A -- 00EDB0
40 D0 9A 01 F7 68 03 6A 00 6A 50 FC 46 8D 16 0A -- 00EDC0
6A 00 6A 00 6A 13 74 00 FC 7E 83 0A C4 83 00 64 -- 00EDD0
C9 9B 0A C4 83 00 64 28 52 9A FC 76 FF 00 6A 00 -- 00EDE0
C4 2E 00 00 FE 46 C7 00 00 0C C8 57 56 CB 5E 5F -- 00EDF0
03 7E 04 3B 26 04 45 8B 0A 7E C5 F2 32 36 01 FE -- 00EE00
76 C4 1F 7D 04 FC 7E 83 00 00 FC 46 C7 05 F2 E9 -- 00EE10
F2 A0 1E 8E 2E F2 9E 3E 03 2E E7 D1 FC 7E 8B 0A -- 00EE20
FC 7E 83 DB EB FC 46 FF 05 74 06 44 3B 26 05 8B -- 00EE30
3D 80 FC 7E 03 F2 62 3E C5 2E 05 BF E9 03 75 04 -- 00EE40
C5 00 01 05 C7 F4 16 3E C5 2E 05 AF E9 03 75 00 -- 00EE50
FF 2E D8 8B E0 D1 17 77 00 06 3D 04 45 8B 0A 7E -- 00EE60
74 E6 5F E6 47 E6 2C E6 17 E5 FF E5 E0 E1 83 A7 -- 00EE70
00 1E 8E 2E F2 FE 3E 03 2E 02 E7 C1 FC 7E 8B E6 -- 00EE80
C4 83 00 5C ED F9 9A 00 5C ED 99 9A 05 D9 9B F3 -- 00EE90
02 E7 C1 FC 7E 8B 02 C4 83 00 5C ED A7 9A 50 08 -- 00EEA0
36 C4 2E 1D D9 9B F3 00 1E 8E 2E F2 FE 3E 03 2E -- 00EEB0
05 D9 9B F2 FE 3E 03 2E 02 E7 C1 FC 7E 8B F2 F2 -- 00EEC0
F2 F2 3E C5 2E 07 76 00 5C ED 94 9A 1C DE 26 9B -- 00EED0
3E 03 2E 02 E7 C1 FC 7E 8B F2 FA 36 C4 2E 28 EB -- 00EEE0
94 9A 1C DE 26 9B 05 D9 9B F3 00 1E 8E 2E F2 FE -- 00EEF0
FC 7E 8B 05 DF 9B F2 FA 3E C5 2E 1B 73 00 5C ED -- 00EF00
1D D9 9B F3 00 1E 8E 2E F2 FE 3E 03 2E 02 E7 C1 -- 00EF10
2E 00 F1 E9 03 74 00 03 3D 05 8B F2 6E 3E C5 2E -- 00EF20
D9 9B 00 E2 E9 03 74 00 64 3D 05 8B F4 1E 3E C5 -- 00EF30

F2 FE 3E 03 2E 02 E7 C1 FC 7E 8B F4 5E DD 9B EE -- 00EF40
5C ED 94 9A F4 5E DC 9B 05 D9 9B F3 00 1E 8E 2E -- 00EF50
03 2E 02 E7 C1 FC 7E 8B F4 22 36 C4 2E 4A 76 00 -- 00EF60
9A 1C DE 26 9B 05 D9 9B F3 00 1E 8E 2E F2 FE 3E -- 00EF70
50 E0 D1 05 8B F4 22 3E C5 2E 27 73 00 5C ED 94 -- 00EF80
03 2E 02 E7 C1 FC 7E 8B 02 C4 83 00 5C ED A7 9A -- 00EF90
```

```
EE  D9  9B  70  EB  2D  D8  9B  F3  00  1E  8E  2E  F2  FE  3E  --  00EFA0
2E  F2  FE  3E  03  2E  02  E7  C1  FC  7E  8B  F4  5E  DD  9B  --  00EFB0
00  5C  ED  94  9A  F4  5E  DC  9B  05  D9  9B  F3  00  1E  8E  --  00EFC0
3E  03  2E  02  E7  C1  FC  7E  8B  F4  22  36  C4  2E  4E  73  --  00EFD0
DE  26  9B  E0  D9  9B  05  D9  9B  F3  00  1E  8E  2E  F2  FE  --  00EFE0
D1  05  8B  F4  22  3E  C5  2E  28  73  00  5C  ED  94  9A  1C  --  00EFF0
C1  FC  7E  8B  02  C4  83  00  5C  ED  A7  9A  50  E0  01  FE  --  00F000
9B  05  D8  9B  F3  00  1E  8E  2E  F2  FE  3E  03  2E  02  E7  --  00F010
C1  FC  7E  8B  F2  F6  36  FF  2E  F2  F8  36  FF  2E  1D  D9  --  00F020
9A  05  D9  9B  F3  00  1E  8E  2E  F2  FE  3E  03  2E  02  E7  --  00F030
EB  F2  9A  50  08  C4  83  00  5C  ED  F9  9A  00  5C  ED  99  --  00F040
2E  F2  F8  16  8B  2E  F2  F6  06  8B  2E  06  C4  83  00  14  --  00F050
FF  2E  50  FE  46  8D  16  02  55  89  05  89  F4  0A  3E  C5  --  00F060
36  FF  2E  F2  A4  36  FF  2E  F4  0E  36  FF  2E  F4  10  36  --  00F070
FF  F2  7A  3E  C5  2E  06  75  FF  0A  7E  C5  0B  6A  F2  A2  --  00F080
3E  C5  2E  16  C4  83  00  64  3D  BA  9A  04  6A  07  6A  35  --  00F090
2E  02  E7  C1  FC  7E  8B  29  75  00  03  3D  05  8B  F2  6E  --  00F0A0
C1  FC  7E  8B  05  D9  9B  F3  00  1E  8E  2E  F2  FE  3E  03  --  00F0B0
E9  1D  D9  9B  F3  04  1E  8E  2E  F3  02  3E  03  2E  02  E7  --  00F0C0
16  8B  2E  F3  02  06  03  2E  02  E0  C1  FC  46  8B  03  35  --  00F0D0
2E  F2  FE  3E  03  2E  02  E7  C1  FC  7E  8B  50  52  F3  04  --  00F0E0
D9  9A  01  6A  00  5C  ED  99  9A  05  D9  9B  F3  00  1E  8E  --  00F0F0
7D  04  FC  7E  83  00  00  FC  46  C7  0E  C4  83  00  14  EA  --  00F100
04  1E  8E  2E  F3  02  3E  03  2E  02  E7  C1  FC  7E  8B  2F  --  00F110
C4  83  00  5C  EE  14  9A  00  5C  ED  99  9A  05  D9  9B  F3  --  00F120
CB  EB  FC  46  FF  05  88  FC  7E  03  F3  06  3E  C5  2E  08  --  00F130
2E  F3  06  36  FF  2E  F3  08  36  FF  2E  50  FE  46  8D  16  --  00F140
D0  9A  01  97  68  06  6A  F3  0A  36  FF  2E  F3  0C  36  FF  --  00F150
00  6A  00  6A  13  74  00  FE  7E  83  10  C4  83  00  64  40  --  00F160
2E  0A  C4  83  00  64  28  52  9A  FE  76  FF  00  6A  00  6A  --  00F170
05  8A  F3  0A  3E  C5  2E  53  75  00  3D  83  F2  72  3E  C5  --  00F180
45  8A  F3  0A  3E  C5  2E  05  88  F3  DA  3E  C5  2E  E4  2A  --  00F190
8A  F3  0A  3E  C5  2E  05  88  F3  DE  3E  C5  2E  E4  2A  01  --  00F1A0
50  FE  46  8D  16  05  88  F3  E2  3E  C5  2E  E4  2A  02  45  --  00F1B0
5B  68  05  6A  01  6A  F3  0E  36  FF  2E  F3  10  36  FF  2E  --  00F1C0
2A  3E  C5  2E  02  12  E9  0E  C4  83  00  64  40  D0  9A  01  --  00F1D0
23  74  00  3D  83  F3  92  3E  C5  2E  0A  75  00  3D  83  F2  --  00F1E0
6A  F2  56  36  FF  2E  F2  58  36  FF  2E  50  FE  46  8D  16  --  00F1F0
83  00  64  40  D0  9A  01  32  68  06  6A  00  6A  00  01  FE  --  00F200
ED  99  9A  05  D9  9B  F3  02  3E  C5  2E  01  DB  E9  10  C4  --  00F210
88  F3  C2  3E  C5  2E  08  C4  83  00  5C  EE  14  9A  00  5C  --  00F220
00  5C  ED  99  9A  04  45  D9  9B  F3  02  3E  C5  2E  01  45  --  00F230
2E  05  88  F3  C2  3E  C5  2E  08  C4  83  00  5C  EE  14  9A  --  00F240
EE  14  9A  00  5C  ED  99  9A  08  45  D9  9B  F3  02  3E  C5  --  00F250
3E  C5  2E  03  45  88  F3  C2  3E  C5  2E  08  C4  83  00  5C  --  00F260
00  5C  EE  14  9A  00  5C  ED  99  9A  0C  45  D9  9B  F3  02  --  00F270
50  FE  46  8D  16  02  45  88  F3  C2  3E  C5  2E  08  C4  83  --  00F280
64  40  D0  9A  01  4C  68  05  6A  35  FF  02  75  FF  01  6A  --  00F290
00  6A  00  6A  00  6A  13  74  00  FE  7E  83  0E  C4  83  00  --  00F2A0
46  8D  16  0A  C4  83  00  64  28  52  9A  FE  76  FF  00  6A  --  00F2B0
C4  83  00  64  40  D0  9A  01  F7  68  03  6A  00  6A  50  FE  --  00F2C0
2E  F2  FE  3E  03  2E  02  E7  C1  FC  7E  8B  01  1C  E9  0A  --  00F2D0

1D  D9  9B  05  D8  9B  F4  1A  06  DF  2E  9B  F3  00  1E  8E  --  00F2E0
8E  2E  F2  FE  3E  03  2E  02  E7  C1  FC  7E  8B  FB  92  E9  --  00F2F0
E7  C1  FC  7E  8B  DF  EB  F4  1C  06  DF  2E  9B  F3  00  1E  --  00F300
CA  EB  E8  D9  9B  F3  00  1E  8E  2E  F2  FE  3E  03  2E  02  --  00F310
F3  00  1E  8E  2E  F2  FE  3E  03  2E  02  E7  C1  FC  7E  8B  --  00F320
E7  C1  FC  7E  8B  B2  EB  2D  D8  9B  F4  1A  06  DF  2E  9B  --  00F330
1C  06  DF  2E  9B  F3  00  1E  8E  2E  F2  FE  3E  03  2E  02  --  00F340
```

```
8E  2E  F2  FE  3E  03  2E  02  E7  C1  FC  7E  8B  E3  EB  F4  --  00F350
FC  7E  03  F3  FE  3E  C5  2E  CE  EB  E8  D9  9B  F3  00  1E  --  00F360
05  C6  F4  02  3E  C5  2E  1D  75  00  FF  3D  E4  2A  05  8A  --  00F370
7E  03  F3  FE  3E  C5  2E  02  05  C6  F4  06  3E  C5  2E  01  --  00F380
C5  2E  02  05  C6  F4  02  3E  C5  2E  1B  EB  00  05  C6  FC  --  00F390
05  C6  FC  7E  03  F3  FE  3E  C5  2E  01  05  C6  F4  06  3E  --  00F3A0
F4  12  36  FF  2E  F4  14  36  FF  2E  50  FE  46  8D  16  FF  --  00F3B0
D1  FC  7E  8B  06  6A  F2  CA  36  FF  2E  F2  CC  36  FF  2E  --  00F3C0
3E  C5  2E  35  FF  F2  A0  1E  8E  2E  F2  9E  3E  03  2E  E7  --  00F3D0
16  C4  83  00  64  3D  BA  9A  04  6A  07  6A  35  FF  F2  7A  --  00F3E0
76  FF  00  6A  00  6A  00  6A  00  6A  13  74  00  FE  7E  83  --  00F3F0
CB  5E  5F  C9  9B  0A  C4  83  00  64  28  52  9A  FE  01  FE  --  00F400
00  00  FA  46  C7  00  00  FE  46  C7  00  00  06  C8  57  56  --  00F410
83  00  00  FC  46  C7  72  74  00  3D  83  F2  6A  3E  C5  2E  --  00F420
50  FE  46  8D  16  2E  75  00  FE  7E  83  34  7D  04  FC  7E  --  00F430
FF  F2  A0  1E  8E  2E  F2  9E  3E  03  2E  E7  D1  FC  7E  8B  --  00F440
64  3D  BA  9A  07  6A  02  6A  35  FF  F2  7A  3E  C5  2E  35  --  00F450
6A  13  74  00  FE  7E  83  C6  EB  FC  46  FF  0C  C4  83  00  --  00F460
83  00  64  28  52  9A  FE  76  FF  00  6A  00  6A  00  6A  00  --  00F470
AC  9A  05  74  00  03  3D  05  8B  F2  6E  3E  C5  2E  0A  C4  --  00F480
5F  C9  C0  2B  00  00  05  C7  F2  6A  3E  C5  2E  00  14  E7  --  00F490
FC  46  C7  00  00  FE  46  C7  00  00  04  C8  57  56  CB  5E  --  00F4A0
FE  46  8D  16  22  75  00  3D  83  F2  72  3E  C5  2E  00  00  --  00F4B0
6A  35  FF  F2  7A  3E  C5  2E  35  FF  F3  2E  3E  C5  2E  50  --  00F4C0
C5  2E  01  46  E9  0C  C4  83  00  64  3D  BA  9A  07  6A  02  --  00F4D0
00  3D  83  F3  92  3E  C5  2E  0A  75  00  3D  83  F2  2A  3E  --  00F4E0
B2  36  FF  2E  F3  B4  36  FF  2E  50  FE  46  8D  16  69  74  --  00F4F0
83  00  64  40  D0  9A  01  32  68  06  6A  00  6A  00  6A  F3  --  00F500
00  6A  00  6A  00  6A  00  6A  13  74  00  FE  7E  83  10  C4  --  00F510
F3  8A  3E  C5  2E  0A  C4  83  00  64  28  52  9A  FE  76  FF  --  00F520
36  FF  2E  50  FE  46  8D  16  00  C8  E9  03  75  00  3D  83  --  00F530
01  32  68  06  6A  00  6A  00  6A  F3  BA  36  FF  2E  F3  BC  --  00F540
F3  8A  3E  C5  2E  00  8C  E9  10  C4  83  00  64  40  D0  9A  --  00F550
C6  3E  C5  2E  00  6A  50  FE  46  8D  16  37  74  00  3D  83  --  00F560
00  64  40  D0  9A  01  4C  68  05  6A  35  FF  02  75  FF  F3  --  00F570
6A  00  6A  00  6A  00  6A  13  74  00  FE  7E  83  0E  C4  83  --  00F580
FE  46  8D  16  0A  C4  83  00  64  28  52  9A  FE  76  FF  00  --  00F590
68  05  6A  35  FF  02  75  FF  F3  C6  3E  C5  2E  01  6A  50  --  00F5A0
13  74  00  FE  7E  83  0E  C4  83  00  64  40  D0  9A  01  4C  --  00F5B0
00  64  28  52  9A  FE  76  FF  00  6A  00  6A  00  6A  00  6A  --  00F5C0
9A  01  F7  68  03  6A  00  6A  50  FE  46  8D  16  0A  C4  83  --  00F5D0
6A  00  6A  13  74  00  FE  7E  83  0A  C4  83  00  64  40  D0  --  00F5E0
0A  C4  83  00  64  28  52  9A  FE  76  FF  00  6A  00  6A  00  --  00F5F0
50  FE  46  8D  16  00  00  05  C7  F3  AE  3E  C5  2E  01  FE  --  00F600
D0  9A  01  FE  68  05  6A  FC  76  FF  57  F3  B0  36  FF  2E  --  00F610
00  6A  00  6A  13  74  00  FE  7E  83  0E  C4  83  00  64  40  --  00F620
2B  0A  C4  83  00  64  28  52  9A  FE  76  FF  00  6A  00  6A  --  00F630
00  00  FE  46  C7  00  00  1E  C8  57  56  CB  5E  5F  C9  C0  --  00F640
3E  03  2E  02  E7  C1  FE  7E  8B  33  7D  01  00  FE  7E  81  --  00F650
7E  8B  1D  D9  9B  FE  46  DF  9B  F4  28  1E  8E  2E  F4  26  --  00F660
DF  9B  F4  2C  1E  8E  2E  F4  2A  3E  03  2E  02  E7  C1  FE  --  00F670

83  F2  6E  3E  C5  2E  C6  EB  FE  46  FF  1D  D9  9B  FE  46  --  00F680
9B  05  DF  9B  F2  FA  3E  C5  2E  01  35  E9  03  75  00  3D  --  00F690
9B  F6  5E  D9  9B  05  DF  9B  F2  F2  3E  C5  2E  FA  5E  D9  --  00F6A0
00  00  FE  46  C7  F2  5E  D9  9B  FA  66  D8  9B  F6  46  D9  --  00F6B0
5E  DD  9B  F4  2E  06  DF  2E  9B  3A  7D  01  00  FE  7E  81  --  00F6C0
5E  DD  9B  E2  76  DC  9B  F2  4E  D8  9B  FE  46  DF  9B  E2  --  00F6D0
2C  1E  8E  2E  F4  2A  3E  03  2E  02  E7  C1  FE  7E  8B  EA  --  00F6E0
EB  FE  46  FF  1D  D9  9B  EA  66  DC  9B  F6  46  D9  9B  F4  --  00F6F0
```

77

```
83 00 5C ED F9 9A 00 5C ED 99 9A FA 46 D9 9B BF -- 00F700
ED 94 9A F6 5E D8 9B FE 46 DF 9B FE 46 89 08 C4 -- 00F710
DF 9B E2 5E DD 9B F4 2E 06 DF 2E 9B 40 77 00 5C -- 00F720
DD 9B F2 76 D8 9B E2 4E DC 9B FA 66 D8 9B FE 46 -- 00F730
1E 8E 2E F4 26 3E 03 2E 02 E7 C1 FE 7E 8B EA 5E -- 00F740
FF 1D D9 9B EA 66 DC 9B F4 2E 06 DF 2E 9B F4 28 -- 00F750
5E D8 9B FE 46 DF 9B 00 00 FE 46 C7 B1 EB FE 46 -- 00F760
03 2E 02 E7 C1 FE 7E 8B 1E 73 00 5C ED 94 9A FA -- 00F770
D9 9B F4 2E 06 DF 2E 9B F4 28 1E 8E 2E F4 26 3E -- 00F780
9A 00 5C ED 99 9A F6 46 D9 9B D3 EB FE 46 FF 1D -- 00F790
7D 01 00 FE 7E 81 FE 46 89 08 C4 83 00 5C ED F9 -- 00F7A0
28 1E 8E 2E F4 26 3E 03 2E 02 E7 C1 FE 7E 8B 1B -- 00F7B0
5E 5F C9 9B DE EB FE 46 FF 1D D9 9B EE D9 9B F4 -- 00F7C0
3E 03 2E 02 E7 C1 0A 7E 8B 00 00 14 C8 57 56 CB -- 00F7D0
89 FC 46 89 02 55 8B 05 8B F4 32 1E 8E 2E F4 30 -- 00F7E0
00 5C ED F9 9A 00 5C ED 99 9A 0C 46 DD 9B FE 56 -- 00F7F0
DD 9B 02 C4 83 00 5C ED A7 9A 50 08 C4 83 01 FE -- 00F800
D9 9B F4 5E D9 9B EC 66 DC 9B 0C 46 DD 9B EC 5E -- 00F810
9B F4 2E 06 DF 2E 9B F8 5E D9 9B 0C 46 DC 9B E8 -- 00F820
00 5C ED 94 9A EC 5E DC 9B F8 46 D9 9B EC 5E DD -- 00F830
0C 46 DD 9B F8 5E D9 9B F4 2E 06 DF 2E 9B 0A 76 -- 00F840
C1 F8 8B 08 C4 83 00 5C ED F9 9A 00 5C ED 99 9A -- 00F850
9B 0C 5E DD 9B 05 D9 9B FE 5E 8E FC 7E 03 02 E7 -- 00F860
08 C4 83 00 5C ED F9 9A 00 5C ED 99 9A F8 46 D9 -- 00F870
D9 9B 05 D9 9B FE 5E 8E FC 7E 03 02 E7 C1 F8 8B -- 00F880
DC 9B F4 4E D8 9B 0C 66 DC 9B F8 46 D9 9B F8 5E -- 00F890
06 DD 2E 9B 0E 75 00 0A 7E 83 F8 5E D9 9B 0C 46 -- 00F8A0
F4 2E 06 DF 2E 9B F8 5E D9 9B F8 46 D8 9B F4 34 -- 00F8B0
5C ED 94 9A EC 5E DC 9B F8 46 D9 9B EC 5E DD 9B -- 00F8C0
46 D9 9B F8 5E D9 9B F4 2E 06 DF 2E 9B 0A 76 00 -- 00F8D0
08 C8 57 56 CB 5E 5F C9 9B 1D D9 9B 14 7E C5 F8 -- 00F8E0
04 FE 7E 83 00 00 FE 46 C7 00 00 F8 46 C7 00 00 -- 00F8F0
46 FF 20 05 C6 0E 5E 8E 0C 7E 03 FE 7E 8B 11 7D -- 00F900
04 45 88 0C 7E C5 05 8B F4 1E 3E C5 2E E9 EB FE -- 00F910
00 0A 7E 83 1C 75 00 03 3D 05 8B F2 6E 3E C5 2E -- 00F920
2D 05 C6 0C 7E C5 0A 46 89 D8 F7 0A 46 8B 10 7D -- 00F930
FC 46 C7 00 01 FE 46 C7 2B 05 C6 0C 7E C5 06 EB -- 00F940
89 FC 7E F7 99 0A 46 8B 4C 7D 04 FE 7E 83 00 64 -- 00F950
7E 83 06 74 01 F8 7E 83 0C 7F 00 FA 7E 83 FA 46 -- 00F960
29 FA 6E F7 FC 46 8B 00 01 F8 46 C7 1F 75 03 FE -- 00F970
30 05 FA 46 8B 0E 5E 8E 0C 7E 03 FE 7E 8B 0A 46 -- 00F980
89 F4 1C 3E F7 2E 99 FC 46 8B FE 46 FF 05 88 00 -- 00F990
46 C7 00 00 04 C8 57 56 CB 5E 5F C9 AE EB FC 46 -- 00F9A0
E9 03 75 00 03 3D 05 8B F2 6E 3E C5 2E 00 00 FE -- 00F9B0
14 E7 AC 9A 05 74 00 3D 83 F2 6A 3E C5 2E 01 D5 -- 00F9C0
2E 05 89 F4 22 3E C5 2E 05 8B F2 FA 3E C5 2E 00 -- 00F9D0
3E C5 2E 05 89 F4 3C 3E C5 2E 05 8B F2 F2 3E C5 -- 00F9E0
F2 6E 3E C5 2E 05 89 F4 40 3E C5 2E 05 8B F4 1E -- 00F9F0
36 FF 2E 04 6A 05 89 F4 44 3E C5 2E 05 8B 01 FE -- 00FA00
48 36 FF 2E F4 4A 36 FF 2E F2 56 36 FF 2E F2 58 -- 00FA10

7E 83 00 00 FC 46 C7 0A C4 83 00 5C ED 6E 9A F4 -- 00FA20
2E F2 FE 3E 03 2E 02 E7 C1 FC 7E 8B 51 7D 04 FC -- 00FA30
3E 03 2E 02 E7 C1 FC 7E 8B 05 D9 9B F3 00 1E 8E -- 00FA40
02 E7 C1 FC 7E 8B 1D D9 9B F4 4E 1E 8E 2E F4 4C -- 00FA50
FC 7E 8B 05 D9 9B F3 04 1E 8E 2E F3 02 3E 03 2E -- 00FA60
1D D9 9B F4 52 1E 8E 2E F4 50 3E 03 2E 02 E7 C1 -- 00FA70
8B 05 89 F2 FA 3E C5 2E 0A 46 8B A9 EB FC 46 FF -- 00FA80
1E 3E C5 2E 0E 46 8B 05 89 F2 F2 3E C5 2E 0C 46 -- 00FA90
00 FC 46 C7 00 03 05 C7 F2 6E 3E C5 2E 05 89 F4 -- 00FAA0
```

78

```
3E 03 2E 02 E7 C1 FC 7E 8B 2F 7D 04 FC 7E 83 00 -- 00FAB0
7E 8B 15 D9 9B 10 46 DF 9B F3 00 1E 8E 2E F2 FE -- 00FAC0
D9 9B F3 04 1E 8E 2E F3 02 3E 03 2E 02 E7 C1 FC -- 00FAD0
7C 04 FC 7E 83 00 00 FC 46 C7 CB EB FC 46 FF 1D -- 00FAE0
7E 8B F2 F6 36 FF 2E F2 F8 36 FF 2E 00 A5 E9 03 -- 00FAF0
D9 9B F3 00 1E 8E 2E F2 FE 3E 03 2E 02 E7 C1 FC -- 00FB00
9A 50 08 C4 83 00 5C ED F9 9A 00 5C ED 99 9A 05 -- 00FB10
F8 16 8B 2E F2 F6 06 8B 2E 06 C4 83 00 14 EB F2 -- 00FB20
50 FE 46 8D 16 02 55 89 05 89 F4 0A 3E C5 2E F2 -- 00FB30
2E F2 A4 36 FF 2E F4 0E 36 FF 2E F4 10 36 FF 2E -- 00FB40
F2 9E 3E 03 2E E7 D1 FC 7E 8B 0B 6A F2 A2 36 FF -- 00FB50
07 6A 35 FF F2 7A 3E C5 2E 35 FF F2 A0 1E 8E 2E -- 00FB60
13 74 00 FE 7E 83 16 C4 83 00 64 3D BA 9A 04 6A -- 00FB70
00 64 28 52 9A FE 76 FF 00 6A 00 6A 00 6A 00 6A -- 00FB80
57 56 CB 5E 5F C9 9B FF 52 E9 FC 46 FF 0A C4 83 -- 00FB90
03 74 00 03 3D 05 8B F2 6E 3E C5 2E 00 00 02 C8 -- 00FBA0
89 F2 FA 3E C5 2E 05 8B F4 22 3E C5 2E 00 D3 E9 -- 00FBB0
2E 05 89 F2 F2 3E C5 2E 05 8B F4 3C 3E C5 2E 05 -- 00FBC0
3E C5 2E 05 89 F4 1E 3E C5 2E 05 8B F4 40 3E C5 -- 00FBD0
36 FF 2E 04 6A 05 89 F2 6E 3E C5 2E 05 8B F4 44 -- 00FBE0
56 36 FF 2E F2 58 36 FF 2E F4 48 36 FF 2E F4 4A -- 00FBF0
00 00 FE 46 C7 0A C4 83 00 5C ED 6E 9A F2 01 FE -- 00FC00
4C 3E 03 2E 02 E7 C1 FE 7E 8B 51 7D 04 FE 7E 83 -- 00FC10
2E 02 E7 C1 FE 7E 8B 05 D9 9B F4 4E 1E 8E 2E F4 -- 00FC20
C1 FE 7E 8B 1D D9 9B F3 00 1E 8E 2E F2 FE 3E 03 -- 00FC30
8B 05 D9 9B F4 52 1E 8E 2E F4 50 3E 03 2E 02 E7 -- 00FC40
9B F3 04 1E 8E 2E F3 02 3E 03 2E 02 E7 C1 FE 7E -- 00FC50
74 00 3D 83 F2 6A 3E C5 2E A9 EB FE 46 FF 1D D9 -- 00FC60
C7 F2 6A 3E C5 2E 00 14 DB 64 9A 00 00 05 C7 12 -- 00FC70
C8 57 56 CB 5E 5F C9 9B 00 14 DD BA 9A 00 01 05 -- 00FC80
00 03 3D FE 46 89 05 8B F2 6E 3E C5 2E 00 00 08 -- 00FC90
F2 3E C5 2E FC 46 89 05 8B F2 FA 3E C5 2E 1E 75 -- 00FCA0
F8 46 89 05 8B F4 1E 3E C5 2E FA 46 89 05 8B F2 -- 00FCB0
64 24 00 9A 02 6A F4 54 36 FF 2E F4 56 36 FF 2E -- 00FCC0
B9 EF F2 BB 98 05 8A F4 58 3E C5 2E 06 C4 83 00 -- 00FCD0
FF 2E 00 82 E9 03 74 F9 E0 07 3B 2E 43 43 00 03 -- 00FCE0
C5 2E F0 72 F0 00 F0 26 00 53 00 50 00 44 06 67 -- 00FCF0
00 00 05 C7 F2 FA 3E C5 2E 00 01 05 C7 F2 6E 3E -- 00FD00
05 C7 F4 1E 3E C5 2E 00 64 05 C7 F2 F2 3E C5 2E -- 00FD10
3E C5 2E 00 02 05 C7 F2 6E 3E C5 2E 70 EB 00 25 -- 00FD20
83 00 5C ED F9 9A 00 5C ED 99 9A 05 D9 9B F4 5C -- 00FD30
D9 9B F4 60 3E C5 2E 05 89 F2 FA 3E C5 2E 08 C4 -- 00FD40
C5 2E 08 C4 83 00 5C ED F9 9A 00 5C ED 99 9A 05 -- 00FD50
24 EB 00 64 05 C7 F4 1E 3E C5 2E 05 89 F2 F2 3E -- 00FD60
05 C7 F2 FA 3E C5 2E 00 00 05 C7 F2 6E 3E C5 2E -- 00FD70
F4 1E 3E C5 2E 00 FF 05 C7 F2 F2 3E C5 2E 00 00 -- 00FD80
C5 2E F4 2C 16 8B 2E F4 2A 06 8B 2E 00 76 05 C7 -- 00FD90
16 8B 2E F4 26 06 8B 2E 02 55 89 05 89 F4 30 3E -- 00FDA0
FE 7E 83 00 14 E9 4D 9A 06 55 89 04 45 89 F4 28 -- 00FDB0

89 F4 22 3E C5 2E 05 8B F2 FA 3E C5 2E 5F 75 03 -- 00FDC0
2E 05 89 F4 3C 3E C5 2E 05 8B F2 F2 3E C5 2E 05 -- 00FDD0
3E C5 2E 05 89 F4 40 3E C5 2E 05 8B F4 1E 3E C5 -- 00FDE0
F2 6E 3E C5 2E 05 89 F4 44 3E C5 2E 05 8B F2 6E -- 00FDF0
05 89 F2 FA 3E C5 2E FC 46 8B 00 03 05 C7 01 FE -- 00FE00
3E C5 2E F8 46 8B 05 89 F2 F2 3E C5 2E FA 46 8B -- 00FE10
9A 00 00 02 C8 57 56 CB 5E 5F C9 9B 05 89 F4 1E -- 00FE20
05 8B F2 6A 3E C5 2E 00 2C FF 66 9A 00 14 EF 8F -- 00FE30
2E FE 46 8B 00 14 DD BA 9A 00 00 05 C7 FE 46 89 -- 00FE40
00 00 06 C8 57 56 CB 5E 5F C9 05 89 F2 6A 3E C5 -- 00FE50
```

```
E9  03  74  00  3D  83  F2  6A  3E  C5  2E  00  00  FE  46  C7  --  00FE60
2E  00  9F  E9  03  75  00  3D  83  F2  72  3E  C5  2E  00  AC  --  00FE70
01  FA  46  C6  00  92  E9  03  75  00  3D  83  F2  2A  3E  C5  --  00FE80
FE  46  8D  16  17  05  C6  F3  A6  3E  C5  2E  00  FB  46  C6  --  00FE90
40  DO  9A  6E  6A  05  6A  01  6A  57  F3  A8  36  FF  2E  50  --  00FEA0
6A  00  6A  00  6A  13  74  00  FE  7E  83  0E  C4  83  00  64  --  00FEB0
8D  16  0A  C4  83  00  64  28  52  9A  FE  76  FF  00  6A  00  --  00FEC0
46  8D  16  F3  CA  36  FF  2E  F3  CC  36  FF  2E  50  FE  46  --  00FED0
24  36  FF  2E  F3  2A  36  FF  2E  F3  2C  36  FF  2E  50  FA  --  00FEE0
40  DO  9A  00  CC  68  0B  6A  01  6A  F3  22  36  FF  2E  F3  --  00FEF0
6A  00  6A  00  6A  13  74  00  FE  7E  83  1A  C4  83  00  64  --  00FF00
5F  C9  0A  C4  83  00  64  28  52  9A  FE  76  FF  00  6A  00  --  00FF10
F4  74  00  24  FE  68  00  24  FE  70  00  24  FE  6C  CB  5E  --  00FF20
FD  30  00  24  FD  66  00  24  FD  64  00  24  FD  68  00  24  --  00FF30
F4  7E  00  24  FD  34  00  24  FD  32  00  24  F4  7C  00  24  --  00FF40
FD  7F  00  24  FD  2C  00  24  F4  CA  00  24  FD  36  00  24  --  00FF50
F4  8E  00  24  F4  7A  00  24  F4  8C  00  24  F4  C6  00  24  --  00FF60
FD  86  00  3C  F5  A4  00  24  F4  8A  00  24  FE  78  00  24  --  00FF70
FD  7A  00  24  FD  78  00  24  FD  76  00  24  FD  84  00  24  --  00FF80
F4  D6  00  24  FD  7E  00  24  FD  7D  00  24  FD  7C  00  24  --  00FF90
FD  8B  00  24  FD  8A  00  24  FD  89  00  24  FD  88  00  24  --  00FFA0
FD  8F  00  24  FD  8E  00  24  FD  8D  00  24  FD  8C  00  24  --  00FFB0
FD  A3  00  24  FD  A2  00  24  FD  91  00  24  FD  90  00  24  --  00FFC0
FD  A7  00  24  FD  A6  00  24  FD  A5  00  24  FD  A4  00  24  --  00FFD0
FD  AB  00  24  FD  AA  00  24  FD  A9  00  24  FD  A8  00  24  --  00FFE0
F4  B6  00  24  F4  92  00  24  F4  84  00  24  F4  94  00  24  --  00FFF0
00  24  F4  CB  00  24  FE  64  00  24  F4  96  00  24  01  FE  --  010000
00  24  FD  1E  00  24  FD  1A  00  24  FD  18  00  24  FD  14  --  010010
00  24  FD  E6  00  24  FD  6C  00  24  FD  DE  00  24  FD  6A  --  010020
00  24  FD  BE  00  24  FD  BD  00  24  FD  BC  00  24  F4  DE  --  010030
00  24  FD  C3  00  24  FD  BF  00  24  FD  C1  00  24  FD  C0  --  010040
00  24  FD  FE  00  24  FD  C2  00  24  FD  C5  00  24  FD  C4  --  010050
00  24  FE  1E  00  24  FE  16  00  24  FE  0E  00  24  FE  06  --  010060
00  24  FD  EE  00  24  FE  36  00  24  FE  2E  00  24  FE  26  --  010070
00  24  FE  6A  03  08  02  7E  02  F8  02  E8  00  24  FD  F6  --  010080
00  24  FD  DB  00  24  FD  D7  00  24  F4  76  00  24  FE  4E  --  010090
00  24  FE  62  00  24  FE  5E  00  24  FD  DA  00  24  FD  D6  --  0100A0
00  24  FD  28  00  24  FD  25  00  24  FD  24  00  24  FE  60  --  0100B0
00  24  F4  80  00  24  FD  20  00  24  F4  D2  00  24  FD  29  --  0100C0
00  24  FD  15  00  24  FD  2D  00  24  F4  A6  00  24  FE  3E  --  0100D0
00  24  FD  1C  00  24  FD  1B  00  24  FD  17  00  24  FD  16  --  0100E0
00  24  FD  C6  00  24  FD  CE  00  24  F4  CE  00  24  FD  1D  --  0100F0
00  24  FD  9D  00  24  FD  B4  00  24  FD  B1  00  24  F4  70  --  010100
00  0A  00  64  00  24  F4  78  00  24  FD  AC  00  24  FD  92  --  010110
00  24  F9  0C  00  24  F5  0C  00  24  F5  08  00  24  F4  90  --  010120
F5  0A  3F  1A  36  E2  EB  1C  43  2D  00  24  FD  0C  00  FF  --  010130
F4  F0  00  24  F5  00  00  24  F5  04  00  24  F5  06  00  24  --  010140
FE  8A  00  24  FE  85  00  24  FE  84  00  24  F4  E0  00  24  --  010150

DC  46  8D  16  00  00  24  C8  57  56  00  24  FE  86  00  24  --  010160
E4  2A  FF  46  8A  06  C4  83  00  64  24  00  9A  01  6A  50  --  010170
89  FF  A2  3E  C5  2E  0A  46  8B  05  89  FF  9E  3E  C5  2E  --  010180
89  FF  A6  3E  C5  2E  05  89  FF  AA  3E  C5  2E  C0  2B  05  --  010190
14  FB  53  9A  02  C4  83  00  64  00  00  9A  0A  76  FF  05  --  0101A0
3E  C5  2E  00  01  B8  EC  8B  55  57  56  CB  5E  5F  C9  00  --  0101B0
56  CB  5E  5F  C9  05  89  FF  AE  3E  C5  2E  05  89  FF  A6  --  0101C0
3D  83  FF  A6  3E  C5  2E  00  14  FF  40  9A  EC  8B  55  57  --  0101D0
00  05  C7  FF  A6  3E  C5  2E  00  64  16  AC  9A  0E  74  00  --  0101E0
02  6E  68  00  00  04  C8  57  56  CB  5E  5F  C9  C0  2B  00  --  0101F0
89  FC  46  89  04  C4  83  00  64  4E  A1  9A  01  6A  01  FE  --  010200
```

```
0A 7E C5 08 45 89 FC 7E C5 00 14 FB 16 9A FE 56 -- 010210
89 FC 7E C5 02 55 8B 05 8B FF B2 3E C5 2E 05 89 -- 010220
C5 2E 00 00 06 45 C7 00 00 04 45 C7 02 55 89 05 -- 010230
FC 46 8B 00 14 FB F2 9A 17 75 00 3D 83 FF B6 3E -- 010240
2E 2B EB 02 55 89 05 89 FF BA 3E C5 2E FE 56 8B -- 010250
89 04 45 89 FC 7E C5 02 55 8B 05 8B FF B2 3E C5 -- 010260
89 FE 56 8B FC 46 8B 3D C5 FF B2 3E C5 2E 06 55 -- 010270
89 FF B2 3E C5 2E FE 56 8B FC 46 8B 02 55 89 05 -- 010280
56 CB 5E 5F C9 05 FF FF B6 3E C5 2E 02 55 89 05 -- 010290
89 FD 88 86 89 0E 56 8B 0C 46 8B 00 02 82 C8 57 -- 0102A0
92 96 89 FD 90 86 89 5A 16 FD 94 86 8D FD 8A 96 -- 0102B0
0B E9 03 7C 06 FD 86 BE 83 00 00 FD 86 86 C7 FD -- 0102C0
C7 FA 56 89 F8 46 89 FD 8A 96 8B FD 88 86 8B 02 -- 0102D0
80 F8 7E C5 14 7D 15 FD 82 BE 83 00 00 FD 82 86 -- 0102E0
E5 EB F8 46 FF FD 82 86 FF 20 05 C6 03 75 00 3D -- 0102F0
FE 56 89 FC 46 89 40 40 FD 92 96 8B FD 90 86 8B -- 010300
FD 86 86 6B 13 74 00 10 7E 83 00 00 FD 80 86 C7 -- 010310
56 25 75 00 08 7D 83 14 5E 8E 12 7E 03 F8 8B 1A -- 010320
6A FD 88 B6 FF FD 8A B6 FF FC 76 FF FE 76 FF 57 -- 010330
FD 80 86 83 15 FC 46 83 5E 5F 00 5C FE EC 9A 15 -- 010340
00 00 FD 82 86 C7 00 00 FD 84 86 C7 01 6D E9 15 -- 010350
8B 1A FD 86 86 6B 01 57 E9 03 7C 15 FD 82 BE 83 -- 010360
8B FE 03 14 5E 8E 12 7E 03 E7 D1 FD 84 BE 8B F0 -- 010370
D1 FD 84 B6 8B 01 14 E9 03 74 0A 45 3B FD 82 86 -- 010380
00 3D 83 FE 03 12 7E 03 F8 8B 1A FD 86 86 6B E6 -- 010390
36 FF 2E 07 6A 03 6A 00 6A 01 6A 00 D9 E9 03 75 -- 0103A0
97 5E 9A FC 76 FF FE 76 FF FF BE 36 FF 2E FF C0 -- 0103B0
86 6B 06 FD 80 86 83 06 FC 46 83 10 C4 83 00 5C -- 0103C0
5E 8E 12 7E 03 E7 D1 FD 84 BE 8B F0 8B 1A FD 86 -- 0103D0
96 8B FD 88 86 03 FD 82 86 8B 12 75 FF FE 03 14 -- 0103E0
83 00 64 58 BA 9A FC 76 FF FE 76 FF 50 52 FD 8A -- 0103F0
D1 FD 84 BE 8B F0 8B 1A FD 86 86 6B 0A C4 01 FE -- 010400
6B FC 46 01 12 45 8B FE 03 14 5E 8E 12 7E 03 E7 -- 010410
03 12 7E 03 E7 D1 FD 84 BE 8B F0 8B 1A FD 86 86 -- 010420
00 6A 00 6A 07 6A 00 6A FD 80 86 01 12 45 8B FE -- 010430
FC 76 FF FE 76 FF FF C2 36 FF 2E FF C4 36 FF 2E -- 010440
FD 80 86 83 06 FC 46 83 10 C4 83 00 5C 97 5E 9A -- 010450
7E 03 E7 D1 FD 84 BE 8B F0 8B 1A FD 86 86 6B 06 -- 010460
1B EB FD 82 86 01 48 12 45 8B FE 03 14 5E 8E 12 -- 010470
C5 98 05 8A FD 8A 9E 8E FD 88 BE 03 FD 82 BE 8B -- 010480
EB FD 84 86 FF FD 80 86 FF FC 46 FF 05 88 FC 7E -- 010490
98 05 8A FD 8A 9E 8E FD 88 BE 03 FD 82 BE 8B 1B -- 0104A0
FD 82 86 FF FD 80 86 FF FC 46 FF 05 88 FC 7E C5 -- 0104B0
86 86 FF 05 89 FD 90 BE C5 FD 80 86 8B FE 9F E9 -- 0104C0
C5 2E FD EB E9 66 FD 90 86 83 16 FD 88 86 83 FD -- 0104D0
FD 8E 96 89 FD 8C 86 89 02 55 8B 05 8B FF B2 3E -- 0104E0
00 FD 86 86 C7 FD 7E 86 89 05 8B FF B6 3E C5 2E -- 0104F0

8B FD 8C BE C5 44 7D FD 7E 86 3B FD 86 86 8B 00 -- 010500
8C 86 8B FD 8E B6 FF 57 56 20 75 0A 46 3B 08 45 -- 010510
EC 9A 02 64 68 50 FD 94 86 8D 16 50 00 0A 05 FD -- 010520
55 8B 04 45 8B FD 8C BE C5 18 EB 5E 5F 00 5C FE -- 010530
C9 B2 EB FD 86 86 FF FD 8E 96 89 FD 8C 86 89 06 -- 010540
C5 2E 00 00 EE 46 C7 00 00 12 C8 57 56 CB 5E 5F -- 010550
83 01 43 E9 03 75 C0 0B F2 46 89 05 8B FF B6 3E -- 010560
3B 08 45 8B 3D C5 FF B2 3E C5 2E 52 75 01 F2 7E -- 010570
74 00 3D 83 FF AA 3E C5 2E 01 2B E9 03 74 0A 46 -- 010580
2E 00 14 F9 B0 9A 00 00 05 C7 FF C6 3E C5 2E 17 -- 010590
02 75 FF FF B2 3E C5 2E 00 01 05 C7 FF C6 3E C5 -- 0105A0
9A 00 14 FB 53 9A 04 C4 83 00 64 4E E3 9A 35 FF -- 0105B0
```

```
55 8B 05 8B FF B2 3E C5 2E 00 EB E9 00 14 FB 94 -- 0105C0
0A 46 3B 08 45 8B FC 7E C5 FE 56 89 FC 46 89 02 -- 0105D0
3E C5 2E 06 55 8B 04 45 8B 00 01 EE 46 C7 41 75 -- 0105E0
74 00 3D 83 FF AA 3E C5 2E 02 55 89 05 89 FF B2 -- 0105F0
FA 45 9A 08 75 FF 3D C5 FF B2 3E C5 2E 12 01 FE -- 010600
00 64 4E E3 9A FC 76 FF FE 76 FF 02 C4 83 00 14 -- 010610
F2 46 3B F0 46 8B 00 01 F0 46 C7 77 EB 04 C4 83 -- 010620
56 89 FC 46 89 06 55 8B 04 45 8B FC 7E C5 6A 7D -- 010630
55 8B 05 8B 4B 75 0A 46 3B 08 45 8B FC 7E C5 FE -- 010640
F8 7E C5 06 55 8B 04 45 8B FA 56 89 F8 46 89 02 -- 010650
0B F6 46 8B F6 56 89 F4 46 89 06 55 89 04 45 89 -- 010660
89 05 89 F4 7E C5 FA 56 8B F8 46 8B 0E 74 F4 46 -- 010670
04 C4 83 00 64 4E E3 9A FC 76 FF FE 76 FF 02 55 -- 010680
00 EE 7E 83 8E EB F0 46 FF 05 EB 00 01 EE 46 C7 -- 010690
3E C5 2E 00 05 C6 0A 7E 03 FF CA 3E C5 2E 12 74 -- 0106A0
46 C7 00 00 02 C8 57 56 CB 5E 5F C9 0D FF FF B6 -- 0106B0
A6 3E C5 2E 00 00 05 C7 FF AA 3E C5 2E 00 00 FE -- 0106C0
18 74 00 3D 83 FF AE 3E C5 2E 22 74 00 3D 83 FF -- 0106D0
2E 00 64 16 6E 9A 0E 74 00 3D 83 FF C6 3E C5 2E -- 0106E0
00 3D 83 FF B6 3E C5 2E 00 00 05 C7 FF AE 3E C5 -- 0106F0
C5 2E 35 FF FF CE 3E C5 2E 50 FE 46 8D 16 1F 74 -- 010700
C4 83 00 64 3D BA 9A 07 6A 02 6A 35 FF FF A2 3E -- 010710
74 00 FE 7E 83 1B 74 00 3D 83 FF 9E 3E C5 2E 0C -- 010720
1E 9A FF D2 36 FF 2E FF D4 36 FF 2E FE 76 FF 15 -- 010730
55 57 56 CB 5E 5F C9 FE 46 8B 06 C4 83 00 5C 97 -- 010740
B2 3E C5 2E 14 74 00 3D 83 FF B6 3E C5 2E EC 8B -- 010750
00 14 FA 6E 9A 05 75 0A 46 3B 08 45 8B 3D C5 FF -- 010760
00 F2 46 C7 00 00 0E C8 57 56 CB 5E 5F C9 C0 2B -- 010770
FF AE 3E C5 2E 13 74 00 3D 83 FF A6 3E C5 2E 00 -- 010780
C5 2E 00 64 16 8D 9A 00 01 05 C7 09 75 00 3D 83 -- 010790
3E C5 2E 00 14 FE 31 9A 6F 74 00 3D 83 FF B6 3E -- 0107A0
3E F6 46 C7 03 39 F4 46 C7 60 75 00 3D 83 FF AA -- 0107B0
2E 00 6A 00 6A 50 F4 46 8D 16 50 F2 46 8D 16 00 -- 0107C0
6A 06 6A 35 FF FF A2 3E C5 2E 35 FF FF CE 3E C5 -- 0107D0
3D 83 FF 9E 3E C5 2E 14 C4 83 00 64 3D BA 9A 06 -- 0107E0
D8 36 FF 2E F2 76 FF 15 74 00 F2 7E 83 1B 74 00 -- 0107F0
06 C4 83 00 5C 97 1E 9A FF D6 36 FF 2E FF 01 FE -- 010800
CB 5E 5F C9 F2 46 8B 00 01 05 C7 FF AA 3E C5 2E -- 010810
FF CC 16 8B 2E FF CA 06 8B 2E 00 00 06 C8 57 56 -- 010820
7D 32 FE 7E 83 00 00 FE 46 C7 FC 56 89 FA 46 89 -- 010830
EB FE 46 8B 01 05 C6 08 75 00 3D 80 FA 7E C5 18 -- 010840
55 57 56 CB 5E 5F C9 E2 EB FA 46 FF FE 46 FF 08 -- 010850
00 6A FF CA 36 FF 2E FF CC 36 FF 2E 57 56 EC 8B -- 010860
05 C7 FF B6 3E C5 2E 5E 5F 00 8C 00 02 9A 32 6A -- 010870
02 45 89 05 89 D0 8B C0 2B FF BA 3E C5 2E 00 00 -- 010880
57 56 CB 5E 5F C9 02 55 89 05 89 FF B2 3E C5 2E -- 010890

48 74 FF FF 3D 05 8B FF DA 3E C5 2E 00 00 02 C8 -- 0108A0
02 6A 35 FF FF A2 3E C5 2E 35 FF 50 FE 46 8D 16 -- 0108B0
C7 FF DA 3E C5 2E 0C C4 83 00 64 3D BA 9A 16 6A -- 0108C0
FE 7E 83 1B 74 00 3D 83 FF 9E 3E C5 2E FF FF 05 -- 0108D0
FF DE 36 FF 2E FF E0 36 FF 2E FE 76 FF 15 74 00 -- 0108E0
16 C8 57 56 CB 5E 5F C9 06 C4 83 00 5C 97 1E 9A -- 0108F0
46 C6 02 92 46 C6 01 91 46 C6 00 90 46 C6 00 01 -- 010900
9C 46 8D 16 57 56 05 95 46 C6 04 94 46 C6 03 93 -- 010910
C6 82 46 C7 5E 5F 00 8C 00 02 9A 64 6A 20 6A 50 -- 010920
C6 01 88 46 C6 00 06 86 46 C7 00 6C 84 46 C7 00 -- 010930
EC 96 89 FE EA 86 89 5A 16 FE EE 86 8D 03 8A 46 -- 010940
FF 28 86 8D 00 00 96 46 C7 8D 56 89 8B 46 89 FE -- 010950
83 00 00 98 46 C7 FF 26 96 89 FF 24 86 89 5A 16 -- 010960
```

82

```
45 C7 05 88 FE EA BE C5 98 46 8B 70 7D 06 98 7E  --  010970
82 46 8B 12 96 46 83 05 45 89 96 46 8B 00 00 01  --  010980
70 05 C6 FF 24 BE C5 07 45 89 96 46 8B 03 45 89  --  010990
07 45 88 00 01 B8 00 02 03 45 C7 00 03 01 45 C7  --  0109A0
C6 09 45 88 E4 2A 07 45 88 E4 2A 06 45 88 E4 2A  --  0109B0
5A 16 9C 46 8D 64 0A 45 C6 03 08 45 C6 02 05 45  --  0109C0
86 83 09 FE EA 86 83 98 46 FF 0D 55 89 0B 45 89  --  0109D0
2E 50 82 46 8D 16 50 9A 46 8D 16 8A EB 0F FF 24  --  0109E0
FF A2 3E C5 2E 10 6A FF DA 36 FF 2E FF DC 36 FF  --  0109F0
14 C4 83 00 64 3D BA 9A 08 6A 06 6A 35 FF 01 FE  --  010A00
15 74 00 9A 7E 83 1B 74 00 3D 83 FF 9E 3E C5 2E  --  010A10
97 1E 9A FF E2 36 FF 2E FF E4 36 FF 2E 9A 76 FF  --  010A20
F8 E9 9A 46 8B 06 74 00 9A 7E 83 06 C4 83 00 5C  --  010A30
2E 35 FF FF DA 3E C5 2E 64 6A 50 9A 46 8D 16 00  --  010A40
83 00 64 3D BA 9A 15 6A 03 6A 35 FF FF A2 3E C5  --  010A50
00 9A 7E 83 1B 74 00 3D 83 FF 9E 3E C5 2E 0E C4  --  010A60
9A FF E6 36 FF 2E FF E8 36 FF 2E 9A 76 FF 15 74  --  010A70
46 8D 16 AE 75 00 9A 7E 83 06 C4 83 00 5C 97 1E  --  010A80
C5 2E 00 6A FF CE 36 FF 2E FF D0 36 FF 2E 50 9A  --  010A90
02 6A 05 6A 35 FF FF A2 3E C5 2E 35 FF FF DA 3E  --  010AA0
00 3D 83 FF 9E 3E C5 2E 12 C4 83 00 64 3D BA 9A  --  010AB0
FF EC 36 FF 2E 9A 76 FF 15 74 00 9A 7E 83 1B 74  --  010AC0
9A 7E 83 06 C4 83 00 5C 97 1E 9A FF EA 36 FF 2E  --  010AD0
FF 28 86 8D 16 50 9A 46 8D 16 FF 55 E9 03 74 00  --  010AE0
2E 35 FF FF CE 3E C5 2E 06 6A 50 90 46 8D 16 50  --  010AF0
83 00 64 3D BA 9A 0C 6A 07 6A 35 FF FF A2 3E C5  --  010B00
00 9A 7E 83 1B 74 00 3D 83 FF 9E 3E C5 2E 16 C4  --  010B10
9A FF EE 36 FF 2E FF F0 36 FF 2E 9A 76 FF 15 74  --  010B20
C8 57 56 CB 5E 5F C9 C0 2B 06 C4 83 00 5C 97 1E  --  010B30
56 86 C6 01 FF 55 86 C6 00 FF 54 86 C6 00 00 AC  --  010B40
FF 59 86 C6 04 FF 58 86 C6 03 FF 57 86 C6 02 FF  --  010B50
46 89 00 0A 05 02 55 8B 05 8B FF B2 3E C5 2E 05  --  010B60
96 89 FF 5E 86 89 5A 16 FF 62 86 8D FE 56 89 FC  --  010B70
5A 86 C7 A0 56 89 9E 46 89 5A 16 A2 46 8D FF 60  --  010B80
FF 60 B6 FF 57 56 50 7D 06 FF 5A BE 83 00 00 FF  --  010B90
B8 5E 5F 00 8C 00 02 9A 0A 6A 00 6A FF 5E B6 FF  --  010BA0
7E C5 08 45 88 E4 2A 09 45 88 FF 5E BE C5 00 01  --  010BB0
40 FE 56 8B FC 46 8B 0A 45 88 9E 7E C5 05 8B FC  --  010BC0
0A FF 5E 86 83 FF 5A 86 FF 0D 55 89 0B 45 89 40  --  010BD0
50 FF 5C 86 8D 16 A9 EB 66 FC 46 83 0F 9E 46 83  --  010BE0
FF 54 86 8D 16 50 FF 62 86 8D 16 50 A2 46 8D 16  --  010BF0
A2 3E C5 2E 35 FF FF CE 3E C5 2E 06 6A 50 01 FE  --  010C00
2E 1A C4 83 00 64 3D BA 9A 13 6A 09 6A 35 FF FF  --  010C10
16 74 00 FF 5C BE 83 1D 74 00 3D 83 FF 9E 3E C5  --  010C20
1E 9A FF F2 36 FF 2E FF F4 36 FF 2E FF 5C B6 FF  --  010C30

57 56 CB 5E 5F C9 FF 5C 86 8B 06 C4 83 00 5C 97  --  010C40
94 9A FC 46 89 05 8B FF B6 3E C5 2E 00 00 0C C8  --  010C50
F8 46 89 02 55 8B 05 8B FF B2 3E C5 2E 00 14 FB  --  010C60
46 8B 00 00 FE 46 C7 F6 56 89 F4 46 89 FA 56 89  --  010C70
89 06 55 8B 04 45 8B F8 7E C5 22 7D FC 46 3B FE  --  010C80
00 64 4E E3 9A F4 76 FF F6 76 FF FA 56 89 F8 46  --  010C90
00 6C 10 36 CB 5E 5F C9 D6 EB FE 46 FF 04 C4 83  --  010CA0
00 6C 10 34 00 6C 10 2E 00 6C 10 32 00 6C 10 38  --  010CB0
00 6C 0D FC 00 6C 10 28 00 6C 10 2C 00 6C 10 24  --  010CC0
00 6C 10 30 00 6C 0F F2 00 6C 0F F0 00 6C 0E 07  --  010CD0
00 6C 0E 84 00 6C 0F EE 00 6C 0E 4A 00 6C 0E 12  --  010CE0
00 6C 0F 73 00 6C 0F 39 00 6C 0F 01 00 6C 0E C2  --  010CF0
57 56 00 00 00 00 00 00 00 00 00 00 00 6C 0F B0  --  010D00
6A 4E B6 36 FF 2E 4E B8 36 FF 2E 57 56 EC 8B 55  --  010D10
```

```
3E C5 2E 00 01 B8 5E 5F 00 8C 00 02 9A 10 6A 02 -- 010D20
B8 0E 45 88 4E B6 3E C5 2E E4 2A 04 45 88 4E B6 -- 010D30
B6 3E C5 2E E4 2A 0B 45 88 4E B6 3E C5 2E 00 03 -- 010D40
3E C5 2E EC 8B 55 57 56 CB 5E 5F C9 01 45 88 4E -- 010D50
03 18 05 6B 4E BE 3E C5 2E F0 8B 2E 05 6B 4E BA -- 010D60
BA 3E C5 2E C0 2B EC 8B 55 57 56 CB 5E 5F C9 C6 -- 010D70
57 56 CB 5E 5F C9 05 89 4E BE 3E C5 2E 05 89 4E -- 010D80
3E C5 2E 05 89 4E C6 3E C5 2E C0 2B 00 00 04 C8 -- 010D90
F0 E9 03 75 00 3D 83 4E CA 3E C5 2E 05 89 4E C2 -- 010DA0
03 26 4F 3D 8B 4E CA 3E C5 2E 4E CE 36 C4 2E 00 -- 010DB0
34 4A 88 9A 00 A7 E9 E4 2A 05 8A 02 5C 8E 26 3C -- 010DC0
00 A7 E9 03 75 00 01 3D 05 8B 4E CA 3E C5 2E 00 -- 010DD0
FE 56 89 FC 46 89 02 55 8B 05 8B 4E CE 3E C5 2E -- 010DE0
FE 5E 8E FC 7E 03 4F 4F 3C 8B 26 4E CA 36 C4 2E -- 010DF0
89 4E C6 3E C5 2E 00 02 B8 2E 75 02 3D 80 01 FE -- 010E00
2D 05 8B 4E CA 3E C5 2E 05 89 4E C2 3E C5 2E 05 -- 010E10
00 1C 19 66 9A 01 6A 05 89 4E D2 3E C5 2E 00 03 -- 010E20
2E 05 89 4E C6 3E C5 2E 00 01 B8 54 EB 02 C4 83 -- 010E30
2E 48 48 05 8B 4E CA 3E C5 2E 05 89 4E C2 3E C5 -- 010E40
83 00 1C 19 66 9A 00 6A 31 EB 05 89 4E D2 3E C5 -- 010E50
C2 3E C5 2E 05 89 4E C6 3E C5 2E 00 01 B8 02 C4 -- 010E60
FF 2E D8 8B E0 D1 0F 77 00 02 3D 14 EB 05 89 4E -- 010E70
0D FF 4E CA 3E C5 2E 01 48 00 BE 00 BE 01 73 A7 -- 010E80
C7 0A 7E C5 07 75 00 02 3D 05 8B 4E CA 3E C5 2E -- 010E90
3E C5 2E 00 00 12 C8 57 56 CB 5E 5F C9 00 02 05 -- 010EA0
3E C5 2E 09 74 00 12 7E 83 EE 46 89 05 8B 4E D6 -- 010EB0
4E E0 16 8B 2E 4E DE 06 8B 2E 00 00 05 C7 4E DA -- 010EC0
36 FF 2E 4E E4 36 FF 2E 57 56 FE 56 89 FC 46 89 -- 010ED0
9A 01 20 68 4E DE 36 FF 2E 4E E0 36 FF 2E 4E E2 -- 010EE0
FA 46 FF 03 EB 00 00 FA 46 C7 5E 5F 00 5C FE EC -- 010EF0
8E FC 7E 03 05 E7 C1 FA 7E 8B 12 7D 08 FA 7E 83 -- 010F00
FE 76 FF 50 F4 46 8D 16 E5 EB 45 1E 45 C6 FE 5E -- 010F10
FF 0C 76 FF 0E 76 FF 10 76 FF 12 76 FF FC 76 FF -- 010F20
89 4E E6 3E C5 2E 12 C4 83 00 1C 1D F5 9A 0A 76 -- 010F30
4E E6 3E C5 2E 05 89 4E EA 3E C5 2E F4 46 8B 05 -- 010F40
50 04 9A 01 6A 0A 75 01 EE 7E 83 03 10 E9 05 8B -- 010F50
45 C6 FC 7E C5 37 74 00 12 7E 83 02 C4 83 00 34 -- 010F60
C5 08 5D D9 9B FC 7E C5 05 D9 9B 0A 7E C5 4D 1E -- 010F70
01 EE 7E 83 0C 5D D9 9B FC 7E C5 05 D9 9B 0E 7E -- 010F80
04 C4 83 00 1C 28 94 9A FC 76 FF FE 76 FF 60 75 -- 010F90
7E C5 1D D9 9B FC 7E C5 05 D9 9B 0A 7E C5 50 EB -- 010FA0
D9 9B 0A 7E C5 04 5D D9 9B FC 7E C5 05 D9 9B 0E -- 010FB0
04 45 D9 9B 0E 7E C5 08 5D D9 9B FC 7E C5 04 45 -- 010FC0
7E 83 4C 1E 45 C6 FC 7E C5 0C 5D D9 9B FC 7E C5 -- 010FD0

83 00 1C 28 94 9A FC 76 FF FE 76 FF 0E 74 03 EE -- 010FE0
FC 7E C5 05 D9 9B 0A 7E C5 02 A5 E9 C0 2B 04 C4 -- 010FF0
9B FC 7E C5 05 D9 9B 0E 7E C5 08 5D D9 9B 01 FE -- 011000
18 75 01 EE 7E 83 4D 1E 45 C6 FC 7E C5 0C 5D D9 -- 011010
FC 76 FF FE 76 FF 02 C4 83 00 34 50 04 9A 01 6A -- 011020
E9 C0 2B 02 61 E9 C0 2B 04 C4 83 00 1C 28 94 9A -- 011030
04 C4 83 00 1C 34 AD 9A FC 76 FF FE 76 FF 02 5C -- 011040
34 50 04 9A F8 76 FF 0B 75 01 EE 7E 83 F8 46 89 -- 011050
46 83 FA 46 FF 07 EB 00 00 FA 46 C7 02 C4 83 00 -- 011060
0E 75 02 F8 7E 83 31 7D F8 46 3B FA 46 8B 20 FC -- 011070
7E 83 04 C4 83 00 1C 36 0B 9A FC 76 FF FE 76 FF -- 011080
83 00 1C 28 94 9A FC 76 FF FE 76 FF D7 74 03 EE -- 011090
7D 08 FA 7E 83 20 FC 46 83 FA 46 FF C7 EB 04 C4 -- 0110A0
83 01 DF E9 C0 2B EA EB 45 1E 45 C6 FC 7E C5 09 -- 0110B0
83 02 C4 83 00 34 50 04 9A 01 6A 0A 75 01 EE 7E -- 0110C0
```

84

```
00  1C  28  94  9A  FC  76  FF  FE  76  FF  0E  74  03  EE  7E  --  0110D0
F0  46  89  F8  D1  F4  46  8B  01  B6  E9  C0  2B  04  C4  83  --  0110E0
8B  FA  46  FF  03  EB  00  00  F2  46  C7  00  00  FA  46  C7  --  0110F0
1E  7D  80  FC  7E  C5  00  9B  E9  03  7C  F0  46  3B  FA  46  --  011100
01  EE  7E  83  00  82  E9  03  75  03  EE  7E  83  22  75  4C  --  011110
00  1C  28  94  9A  FC  76  FF  FE  76  FF  F2  46  FF  03  75  --  011120
00  1C  34  AD  9A  FC  76  FF  FE  76  FF  69  EB  04  C4  83  --  011130
01  F8  46  8B  06  75  01  EE  7E  83  F8  46  89  04  C4  83  --  011140
3B  F6  46  8B  F6  46  FF  03  EB  00  00  F6  46  C7  F2  46  --  011150
05  E0  C1  F6  46  8B  16  75  02  F8  7E  83  3A  7D  F8  46  --  011160
04  C4  83  00  1C  36  0B  9A  50  52  FE  56  8B  FC  46  03  --  011170
8B  FC  46  03  05  E0  C1  F6  46  8B  D3  74  03  EE  7E  83  --  011180
46  83  BB  EB  04  C4  83  00  1C  28  94  9A  50  52  FE  56  --  011190
FA  46  FF  07  EB  FA  46  89  F4  46  8B  FF  57  E9  40  FC  --  0111A0
1E  45  C6  FC  7E  C5  09  7D  08  FA  7E  83  20  FC  46  83  --  0111B0
83  6D  75  03  85  3D  05  8B  4E  E6  3E  C5  2E  EA  EB  45  --  0111C0
05  4E  DE  06  8B  2E  4E  E0  36  FF  2E  16  74  03  EE  7E  --  0111D0
36  FF  2E  20  6A  04  C4  83  00  1C  28  94  9A  50  01  00  --  0111E0
4E  E0  36  FF  2E  50  01  00  05  4E  DE  06  8B  2E  4E  E0  --  0111F0
C7  0A  C4  83  00  5C  ED  6E  9A  4E  DE  36  FF  2E  01  FE  --  011200
8B  16  7D  08  FA  7E  83  FA  46  FF  03  EB  00  01  FA  46  --  011210
C6  4E  E0  1E  8E  2E  4E  DE  3E  03  2E  05  E7  C1  FA  7E  --  011220
7E  83  00  01  05  C7  4E  EA  3E  C5  2E  E1  EB  45  1E  45  --  011230
2E  02  C4  83  00  34  50  04  9A  F2  76  FF  21  75  01  EE  --  011240
50  04  9A  01  6A  0A  75  03  85  3D  05  8B  4E  E6  3E  C5  --  011250
43  00  09  B9  05  66  BB  37  EB  C0  2B  02  C4  83  00  34  --  011260
00  66  00  64  12  67  FF  2E  28  75  F9  E0  07  3B  2E  43  --  011270
02  E7  03  86  03  85  01  91  00  FF  00  CA  00  C9  00  67  --  011280
03  AD  03  D6  03  AD  02  45  03  D6  03  AD  03  2B  03  30  --  011290
C7  4E  EE  3E  C5  2E  EC  8B  55  57  56  CB  5E  5F  C9  9B  --  0112A0
C5  2E  EC  8B  55  57  56  CB  5E  5F  C9  C0  2B  00  01  05  --  0112B0
55  57  56  CB  5E  5F  C9  C0  2B  00  00  05  C7  4E  EE  3E  --  0112C0
2E  00  CA  E9  03  74  00  3D  83  4E  F2  3E  C5  2E  EC  8B  --  0112D0
00  3D  83  4E  CA  3E  C5  2E  00  01  05  C7  4E  F2  3E  C5  --  0112E0
75  00  02  3D  05  8B  4E  C2  3E  C5  2E  00  A2  E9  03  75  --  0112F0
88  9A  00  9B  E9  03  74  00  3D  83  4E  F6  3E  C5  2E  66  --  011300
4F  3D  8B  4E  CA  3E  C5  2E  4E  CE  36  C4  2E  00  34  4A  --  011310
4E  CE  36  C4  2E  01  05  C6  02  5C  8E  26  3C  03  26  4F  --  011320
C6  02  5C  8E  26  3C  03  26  4F  3D  8B  4E  CA  3E  C5  2E  --  011330
4E  D2  3E  C5  2E  48  48  05  8B  4E  CA  3E  C5  2E  02  05  --  011340
19  66  9A  01  6A  00  02  05  C7  4E  C6  3E  C5  2E  05  89  --  011350
2E  48  05  8B  4E  CA  3E  C5  2E  42  EB  02  C4  83  00  1C  --  011360
2E  00  01  05  C7  4E  C6  3E  C5  2E  05  89  4E  D2  3E  C5  --  011370

8E  26  3C  03  26  3D  8B  4E  D2  3E  C5  2E  4E  CE  36  C4  --  011380
00  00  05  C7  4E  D2  3E  C5  2E  12  EB  01  05  C6  02  5C  --  011390
C8  57  56  CB  5E  5F  C9  00  01  05  C7  4E  C6  3E  C5  2E  --  0113A0
3E  C5  2E  0D  75  00  3D  83  4E  F2  3E  C5  2E  00  00  26  --  0113B0
83  4E  F6  3E  C5  2E  01  6F  E9  03  75  00  3D  83  4E  F6  --  0113C0
3E  C5  2E  00  00  05  C7  4E  C2  3E  C5  2E  09  74  00  3D  --  0113D0
03  75  00  3D  83  4E  CA  3E  C5  2E  00  00  05  C7  4E  F2  --  0113E0
8B  05  8B  4E  CE  3E  C5  2E  00  34  4A  19  9A  01  3D  E9  --  0113F0
26  4E  CA  36  C4  2E  DC  56  89  DA  46  89  02  55  01  FE  --  011400
CF  E9  03  74  02  3D  80  DC  5E  8E  DA  7E  03  4F  3C  8B  --  011410
26  4F  4F  3D  8B  4E  CA  3E  C5  2E  4E  CE  36  C4  2E  00  --  011420
00  1C  19  66  9A  00  6A  00  05  C6  02  5C  8E  26  3C  03  --  011430
4F  3D  8B  4E  CA  3E  C5  2E  4E  FA  36  C4  2E  02  C4  83  --  011440
D9  9B  05  D9  9B  02  5C  8E  26  3C  03  26  02  E7  C1  4F  --  011450
4F  4F  3D  8B  4E  CA  3E  C5  2E  4E  FE  36  C4  2E  E0  5E  --  011460
5E  D9  9B  05  D9  9B  02  5C  8E  26  3C  03  26  02  E7  C1  --  011470
```

EP 0 533 348 A2

```
E7  C1  4F  3D  8B  4E  CA  3E  C5  2E  4E  FA  36  C4  2E  E4  --  011480
2E  E8  5E  D9  9B  05  D9  9B  02  5C  8E  26  3C  03  26  02  --  011490
26  02  E7  C1  4F  3D  8B  4E  CA  3E  C5  2E  4E  FE  36  C4  --  0114A0
FE  46  C6  EC  5E  D9  9B  05  D9  9B  02  5C  8E  26  3C  03  --  0114B0
50  E0  46  8D  16  02  C4  83  00  34  50  04  9A  01  6A  4C  --  0114C0
48  05  8B  4E  CA  3E  C5  2E  04  C4  83  00  1C  28  94  9A  --  0114D0
00  01  05  C7  4E  C6  3E  C5  2E  05  89  4E  D2  3E  C5  2E  --  0114E0
3C  03  26  4F  3D  8B  4E  CA  3E  C5  2E  4E  CE  36  C4  2E  --  0114F0
2B  74  C0  0B  00  34  50  A4  9A  00  05  C6  02  5C  8E  26  --  011500
00  64  28  52  9A  50  08  68  00  6A  00  6A  00  6A  00  6A  --  011510
04  C4  83  00  1C  00  80  9A  50  DE  46  8D  16  0A  C4  83  --  011520
CB  5E  5F  C9  9B  00  00  05  C7  4E  C6  3E  C5  2E  09  EB  --  011530
C5  2E  00  01  05  C7  4F  02  3E  C5  2E  EC  8B  55  57  56  --  011540
2E  35  EB  00  1C  05  B9  9A  07  74  00  3D  83  4E  EE  3E  --  011550
3D  83  4F  0A  3E  C5  2E  26  74  00  3D  83  4F  06  3E  C5  --  011560
4F  3D  8B  4F  0A  3E  C5  2E  4F  0E  36  C4  2E  1C  74  00  --  011570
9A  00  01  02  45  C7  02  5C  8E  26  3C  03  26  02  E7  C1  --  011580
2E  EC  8B  55  57  56  CB  5E  5F  C9  C0  2B  00  1C  08  DE  --  011590
35  EB  00  1C  06  99  9A  07  74  00  3D  83  4E  EE  3E  C5  --  0115A0
83  4F  0A  3E  C5  2E  26  74  00  3D  83  4F  06  3E  C5  2E  --  0115B0
3D  8B  4F  0A  3E  C5  2E  4F  0E  36  C4  2E  1C  74  00  3D  --  0115C0
00  00  02  45  C7  02  5C  8E  26  3C  03  26  02  E7  C1  4F  --  0115D0
C0  2B  00  00  05  C7  4F  02  3E  C5  2E  00  1C  09  BC  9A  --  0115E0
83  4E  F2  3E  C5  2E  00  00  04  C8  57  56  CB  5E  5F  C9  --  0115F0
4E  D6  3E  C5  2E  00  C5  E9  C0  2B  05  74  00  3D  01  FE  --  011600
8B  4E  CA  3E  C5  2E  00  A1  E9  03  74  00  01  3D  05  8B  --  011610
83  6F  74  00  06  7D  83  4F  12  3E  C5  2E  FC  46  89  05  --  011620
03  26  4F  FC  7E  8B  4E  CE  36  C4  2E  69  7E  01  FC  7E  --  011630
8B  4E  CE  36  C4  2E  7A  75  00  3D  80  02  5C  8E  26  3C  --  011640
64  74  00  3D  80  02  5C  8E  26  3C  03  26  4F  4F  FC  7E  --  011650
3E  C5  2E  04  C4  83  00  54  D5  E7  9A  50  FE  46  8D  16  --  011660
01  3D  05  8B  4E  D6  3E  C5  2E  FC  46  89  05  8B  4E  CA  --  011670
7E  8B  4E  CE  36  C4  2E  3B  7E  01  FC  7E  83  41  75  00  --  011680
C5  2E  26  EB  01  05  C6  02  5C  8E  26  3C  03  26  4F  FC  --  011690
2E  15  75  01  FC  7E  83  1B  74  00  06  7D  83  4F  12  3E  --  0116A0
4E  DA  3E  C5  2E  09  EB  01  05  C6  3D  C5  4E  CE  3E  C5  --  0116B0
00  01  B8  00  01  05  C7  4E  F2  3E  C5  2E  00  00  05  C7  --  0116C0
2E  00  01  F8  46  C7  00  00  2A  C8  57  56  CB  5E  5F  C9  --  0116D0
C0  2B  03  FD  E9  C0  2B  05  75  00  3D  83  4E  F2  3E  C5  --  0116E0
00  02  3D  05  8B  4E  DA  3E  C5  2E  F4  46  89  F2  46  89  --  0116F0
67  E9  03  74  00  03  3D  05  8B  4E  DA  3E  C5  2E  0F  74  --  011700
36  FF  2E  4E  E2  36  FF  2E  4E  E4  36  FF  2E  57  56  03  --  011710

5F  00  5C  FE  EC  9A  01  20  68  4E  DE  36  FF  2E  4E  E0  --  011720
56  89  FC  46  89  4E  E0  16  8B  2E  4E  DE  06  8B  2E  5E  --  011730
7D  08  FA  7E  83  FA  46  FF  03  EB  00  00  FA  46  C7  FE  --  011740
1E  45  C6  FE  5E  8E  FC  7E  03  05  E7  C1  FA  7E  8B  12  --  011750
2E  DA  5E  D9  9B  05  D9  9B  4F  16  3E  C5  2E  E5  EB  45  --  011760
1A  3E  C5  2E  E6  5E  D9  9B  04  45  D9  9B  4F  16  3E  C5  --  011770
45  D9  9B  4F  1A  3E  C5  2E  DE  5E  D9  9B  05  D9  9B  4F  --  011780
5E  D9  9B  05  D9  9B  4F  1E  3E  C5  2E  EA  5E  D9  9B  04  --  011790
C5  2E  EE  5E  D9  9B  04  45  D9  9B  4F  1E  3E  C5  2E  E2  --  0117A0
2E  00  34  43  02  9A  05  75  00  01  3D  05  8B  4E  D6  3E  --  0117B0
C5  2E  01  26  E9  03  74  00  02  3D  05  8B  4E  DA  3E  C5  --  0117C0
EB  00  01  F6  46  C7  07  75  00  67  3D  05  8B  4E  E6  3E  --  0117D0
4F  2E  36  FF  2E  4F  30  36  FF  2E  50  F6  46  8D  16  3C  --  0117E0
2E  4F  28  36  FF  2E  4F  2A  36  FF  2E  4F  2C  36  FF  2E  --  0117F0
50  DA  46  8D  16  50  D6  46  8D  16  4F  26  36  FF  01  FE  --  011800
83  05  89  4F  22  3E  C5  2E  18  C4  83  00  1C  40  12  9A  --  011810
FC  7E  C5  05  D9  9B  4F  16  3E  C5  2E  4C  74  00  F6  7E  --  011820
```

86

```
9B  FC  7E  C5  04  45  D9  9B  4F  16  3E  C5  2E  1D  D9  9B  --  011830
D9  9B  FC  7E  C5  05  D9  9B  4F  1A  3E  C5  2E  04  5D  D9  --  011840
D9  9B  FC  7E  C5  04  45  D9  9B  4F  1A  3E  C5  2E  08  5D  --  011850
37  E9  00  01  F2  46  C7  4C  1E  45  C6  FC  7E  C5  0C  5D  --  011860
3E  C5  2E  DA  5E  D9  9B  05  D9  9B  4F  1E  3E  C5  2E  01  --  011870
9B  4F  1A  3E  C5  2E  E6  5E  D9  9B  04  45  D9  9B  4F  1E  --  011880
9B  04  45  D9  9B  4F  1A  3E  C5  2E  DE  5E  D9  9B  05  D9  --  011890
2E  E2  5E  D9  9B  05  D9  9B  4F  16  3E  C5  2E  EA  5E  D9  --  0118A0
8D  16  02  6A  EE  5E  D9  9B  04  45  D9  9B  4F  16  3E  C5  --  0118B0
FF  FE  76  FF  50  04  C4  83  00  64  34  23  9A  50  DA  46  --  0118C0
1C  36  FF  2E  4F  16  36  FF  2E  4F  18  36  FF  2E  FC  76  --  0118D0
46  C7  10  C4  83  00  1C  48  82  9A  4F  1A  36  FF  2E  4F  --  0118E0
01  91  3D  05  8B  4E  E6  3E  C5  2E  00  B2  E9  00  01  F4  --  0118F0
C5  2E  18  74  03  86  3D  05  8B  4E  E6  3E  C5  2E  24  74  --  011900
8B  4E  E6  3E  C5  2E  0C  74  03  85  3D  05  8B  4E  E6  3E  --  011910
7E  C5  05  D9  9B  4F  1A  3E  C5  2E  4B  75  00  C9  3D  05  --  011920
FC  7E  C5  04  45  D9  9B  4F  1A  3E  C5  2E  1D  D9  9B  FC  --  011930
9B  FC  7E  C5  05  D9  9B  4F  1E  3E  C5  2E  04  5D  D9  9B  --  011940
9B  FC  7E  C5  04  45  D9  9B  4F  1E  3E  C5  2E  08  5D  D9  --  011950
EB  00  01  F2  46  C7  4C  1E  45  C6  FC  7E  C5  0C  5D  D9  --  011960
04  C4  83  00  64  34  23  9A  50  DA  46  8D  16  01  6A  37  --  011970
1E  36  FF  2E  4F  20  36  FF  2E  FC  76  FF  FE  76  FF  50  --  011980
00  1C  48  82  9A  4F  1A  36  FF  2E  4F  1C  36  FF  2E  4F  --  011990
7E  83  06  75  00  F4  7E  83  00  01  F4  46  C7  10  C4  83  --  0119A0
05  75  00  01  3D  05  8B  4E  D6  3E  C5  2E  11  74  00  F2  --  0119B0
76  FF  FE  76  FF  57  74  00  F4  7E  83  00  34  4A  19  9A  --  0119C0
00  FA  46  C7  F8  46  89  04  C4  83  00  1C  34  AD  9A  FC  --  0119D0
F8  46  3B  FA  46  8B  20  FC  46  83  FA  46  FF  07  EB  00  --  0119E0
0B  9A  FC  76  FF  FE  76  FF  0E  75  02  F8  7E  83  62  7D  --  0119F0
3D  05  8B  4E  D6  3E  C5  2E  04  C4  83  00  1C  36  01  FE  --  011A00
83  00  1C  28  94  9A  FC  76  FF  FE  76  FF  D1  74  00  03  --  011A10
8B  4E  D6  3E  C5  2E  2C  74  00  F2  7E  83  C1  EB  04  C4  --  011A20
76  FF  FE  76  FF  00  01  FA  46  C7  20  74  00  03  3D  05  --  011A30
FF  07  EB  20  FC  46  83  04  C4  83  00  1C  28  94  9A  FC  --  011A40
C6  FC  7E  C5  09  7D  08  FA  7E  83  20  FC  46  83  FA  46  --  011A50
75  00  01  3D  05  8B  4E  D6  3E  C5  2E  EA  EB  45  1E  45  --  011A60
D6  3E  C5  2E  02  C4  83  00  34  50  04  9A  F8  76  FF  0B  --  011A70
3D  05  8B  4E  CA  3E  C5  2E  23  75  00  01  3D  05  8B  4E  --  011A80
3D  8B  4E  CA  3E  C5  2E  4E  CE  36  C4  2E  17  7E  00  01  --  011A90
4E  DA  3E  C5  2E  00  05  C6  02  5C  8E  26  3C  03  26  4F  --  011AA0
3E  C5  2E  00  00  05  C7  4E  F2  3E  C5  2E  00  00  05  C7  --  011AB0

83  06  75  00  F4  7E  83  24  75  00  01  3D  05  8B  4E  D6  --  011AC0
9A  0E  75  00  3D  83  4F  32  3E  C5  2E  18  74  00  F2  7E  --  011AD0
9B  C0  2B  00  54  DB  9F  9A  05  74  C0  0B  00  34  50  A4  --  011AE0
D9  9B  4F  36  3E  C5  2E  EC  8B  55  57  56  CB  5E  5F  C9  --  011AF0
C5  05  D9  9B  4F  3A  3E  C5  2E  1D  D9  9B  0A  7E  C5  05  --  011B00
4F  3E  3E  C5  2E  4F  36  36  C4  2E  04  5D  D9  9B  0A  7E  --  011B10
C4  2E  0C  5D  D9  9B  0A  7E  C5  24  D8  26  9B  05  D9  9B  --  011B20
C5  24  D8  26  9B  05  D9  9B  4F  42  3E  C5  2E  4F  3A  36  --  011B30
8B  2E  04  6B  26  4F  4A  36  C4  2E  08  5D  D9  9B  0A  7E  --  011B40
7E  C5  40  40  C1  03  18  04  6B  26  4F  46  36  C4  2E  C8  --  011B50
46  C6  00  00  86  C8  57  56  CB  5E  5F  C9  9B  05  89  0E  --  011B60
3E  C5  2E  00  00  FF  7C  86  C7  00  00  80  46  C7  00  88  --  011B70
02  C4  83  00  1C  18  E7  9A  02  6A  00  00  05  C7  4F  4E  --  011B80
E4  2A  05  8A  12  7E  C5  FF  FF  05  C7  4F  52  3E  C5  2E  --  011B90
8B  AC  56  89  AA  46  89  0C  56  8B  0A  46  8B  89  46  88  --  011BA0
C1  4F  16  7E  8B  A8  56  89  A6  46  89  10  56  8B  0E  46  --  011BB0
4F  56  3E  C5  2E  05  D9  9B  0C  5E  8E  0A  7E  03  02  E7  --  011BC0
10  5E  8E  0E  7E  03  02  E7  C1  4F  16  7E  8B  1D  D9  9B  --  011BD0
```

```
4F  16  7E  8B  04  5D  D9  9B  4F  56  3E  C5  2E  05  D9  9B  --  011BE0
7E  80  02  DF  E9  03  75  00  3D  80  14  5E  8E  12  7E  03  --  011BF0
00  01  7D  80  12  7E  C5  02  D6  E9  03  75  00  89  01  FE  --  011C00
BE  E9  03  75  00  02  7D  80  12  7E  C5  02  CA  E9  03  75  --  011C10
D9  9B  0C  5E  8E  0A  7E  03  02  E7  C1  4F  16  7E  8B  02  --  011C20
8E  0E  7E  03  02  E7  C1  4F  16  7E  8B  D2  5E  D9  9B  05  --  011C30
9B  05  D9  9B  0A  7E  C5  DE  5E  D9  9B  05  D9  9B  10  5E  --  011C40
0A  7E  C5  E2  5E  D9  9B  05  D9  9B  0E  7E  C5  D6  5E  D9  --  011C50
9B  04  45  D9  9B  0E  7E  C5  DA  5E  D9  9B  04  45  D9  9B  --  011C60
04  C4  83  00  64  34  23  9A  50  D2  46  8D  16  E6  5E  D9  --  011C70
36  FF  2E  50  FF  7E  86  8D  16  05  89  4F  5A  3E  C5  2E  --  011C80
62  36  FF  2E  4F  64  36  FF  2E  4F  66  36  FF  2E  4F  68  --  011C90
50  AE  46  8D  16  4F  5E  36  FF  2E  4F  60  36  FF  2E  4F  --  011CA0
3E  C5  2E  18  C4  83  00  1C  40  12  9A  50  D2  46  8D  16  --  011CB0
C4  83  00  64  33  32  9A  50  D2  46  8D  16  05  89  4F  52  --  011CC0
FF  7A  86  89  C0  2B  02  EB  00  01  B8  05  75  C0  0B  04  --  011CD0
D9  9B  0C  5E  8E  0A  7E  03  02  E7  C1  4F  4F  16  7E  8B  --  011CE0
0E  7E  03  02  E7  C1  4F  4F  16  7E  8B  D2  5E  D9  9B  05  --  011CF0
E7  C1  4F  16  7E  8B  DE  5E  D9  9B  05  D9  9B  10  5E  8E  --  011D00
7E  8B  D6  5E  D9  9B  05  D9  9B  0C  5E  8E  0A  7E  03  02  --  011D10
D9  9B  05  D9  9B  10  5E  8E  0E  7E  03  02  E7  C1  4F  16  --  011D20
9B  0E  7E  C5  DA  5E  D9  9B  05  D9  9B  0A  7E  C5  E2  5E  --  011D30
FC  46  8D  16  50  FF  7E  86  8D  16  E6  5E  D9  9B  05  D9  --  011D40
50  AE  46  8D  16  50  F8  46  8D  16  50  F4  46  8D  16  50  --  011D50
F2  46  89  18  C4  83  00  1C  40  12  9A  50  D2  46  8D  16  --  011D60
74  00  FF  7A  BE  83  01  65  E9  03  75  00  FF  7E  BE  83  --  011D70
9B  0C  75  C0  0B  05  89  4F  52  3E  C5  2E  F2  46  8B  2E  --  011D80
6A  06  DD  2E  9B  1D  D9  9B  4F  62  3E  C5  2E  F4  46  D9  --  011D90
C5  01  30  E9  1D  D9  9B  0D  D8  9B  4F  5E  3E  C5  2E  4F  --  011DA0
0E  7E  C5  D2  5E  D9  9B  8E  56  D9  9B  05  D9  9B  0A  7E  --  011DB0
4F  5A  3E  C5  2E  DE  5E  D9  9B  8A  56  D9  9B  05  D9  9B  --  011DC0
DD  2E  9B  06  EB  4F  72  06  DD  2E  9B  08  74  00  3D  83  --  011DD0
E7  C1  4F  16  7E  8B  0A  76  C4  92  5E  D9  9B  4F  7A  06  --  011DE0
9B  04  44  D8  26  9B  05  D9  9B  0C  5E  8E  0A  7E  03  02  --  011DF0
7E  8B  0E  76  C4  9A  5E  D9  9B  4F  6A  36  DC  2E  01  FE  --  011E00
26  9B  05  D9  9B  10  5E  8E  0E  7E  03  02  E7  C1  4F  16  --  011E10
46  8D  16  96  5E  D9  9B  4F  6A  36  DC  2E  9B  04  44  D8  --  011E20
00  5C  ED  99  9A  92  46  D9  9B  50  A2  46  8D  16  50  9E  --  011E30
ED  99  9A  9A  46  D9  9B  00  5C  ED  99  9A  96  46  D9  9B  --  011E40
9A  8E  46  D9  9B  00  5C  ED  99  9A  8A  46  D9  9B  00  5C  --  011E50

A2  46  D9  9B  30  C4  83  00  4C  B0  08  9A  00  5C  ED  99  --  011E60
7E  C5  9E  46  D9  9B  D6  5E  D9  9B  15  D9  9B  0A  7E  C5  --  011E70
9B  04  45  D9  9B  0A  7E  C5  E2  5E  D9  9B  15  D9  9B  0E  --  011E80
8D  16  E6  5E  D9  9B  04  45  D9  9B  0E  7E  C5  DA  5E  D9  --  011E90
FF  2E  4F  66  36  FF  2E  4F  68  36  FF  2E  50  FF  7E  86  --  011EA0
36  FF  2E  4F  60  36  FF  2E  4F  62  36  FF  2E  4F  64  36  --  011EB0
1C  40  12  9A  50  D2  46  8D  16  50  AE  46  8D  16  4F  5E  --  011EC0
01  FF  7C  86  C7  05  89  4F  52  3E  C5  2E  18  C4  83  00  --  011ED0
84  46  FF  03  EB  00  00  84  46  C7  00  01  82  46  C7  00  --  011EE0
0E  74  00  3D  80  12  7E  C5  66  7D  16  46  3B  84  46  8B  --  011EF0
76  FF  80  46  89  00  1C  08  DE  9A  08  75  00  80  7E  83  --  011F00
01  97  9A  0A  76  FF  0C  76  FF  0E  76  FF  10  76  FF  82  --  011F10
80  7E  83  17  75  00  3D  80  12  7E  C5  0A  C4  83  00  1C  --  011F20
4F  52  3E  C5  2E  80  46  89  00  1C  09  BC  9A  11  74  00  --  011F30
46  83  04  0A  46  83  0A  75  00  82  7E  83  FF  FF  05  C7  --  011F40
7E  8B  8F  EB  12  46  FF  00  00  82  46  C7  05  EB  04  0E  --  011F50
D9  9B  05  D9  9B  AC  5E  8E  AA  7E  03  02  E7  C1  4F  16  --  011F60
9B  A8  5E  8E  A6  7E  03  02  E7  C1  4F  16  7E  8B  C2  5E  --  011F70
C6  5E  D9  9B  05  D9  9B  AA  7E  C5  B2  5E  D9  9B  05  D9  --  011F80
```

88

```
72 74 00 80 7E 83 B6 5E D9 9B 05 D9 9B A6 7E C5 -- 011F90
EB 00 01 86 46 C7 01 88 46 C6 0B 75 00 89 7E 80 -- 011FA0
C6 5E D9 9B 8E 46 D9 9B 3D 74 00 FF 7C BE 83 66 -- 011FB0
CA 5E D9 9B A2 46 D9 9B B6 5E D9 9B 8A 46 D9 9B -- 011FC0
9B 04 45 D9 9B AA 7E C5 BA 5E D9 9B 9E 46 D9 9B -- 011FD0
46 C7 BE 5E D9 9B 04 45 D9 9B A6 7E C5 CE 5E D9 -- 011FE0
CA 5E D9 9B 04 45 D9 9B AA 7E C5 22 EB 00 03 86 -- 011FF0
86 46 C7 BA 5E D9 9B 04 45 D9 9B A6 7E C5 01 FE -- 012000
03 EB 00 00 84 46 C7 00 01 86 46 C7 05 EB 00 02 -- 012010
84 46 8B 00 6A 2A 7D 86 46 3B 84 46 8B 84 46 FF -- 012020
C1 84 46 8B 50 52 00 4E 2D D2 8C C5 03 02 E0 C1 -- 012030
00 1C 01 97 9A 50 52 00 3E 2D D2 8C C5 03 02 E0 -- 012040
00 1C 09 BC 9A 05 74 00 88 7E 80 CB EB 0A C4 83 -- 012050
05 C7 4E F2 3E C5 2E 00 00 05 C7 4E DA 3E C5 2E -- 012060
82 3E C5 2E 22 74 00 3D 83 4F 4E 3E C5 2E 00 00 -- 012070
88 36 FF 2E 07 6A 1B 6A 1B 6A 18 74 00 3D 80 4F -- 012080
C5 2E 0A C4 83 00 5C 97 1E 9A 4F 86 36 FF 2E 4F -- 012090
C5 EC 8B 55 57 56 CB 5E 5F C9 9B 05 8B 4F 4E 3E -- 0120A0
8A 3E C5 2E 05 89 4F 8A 3E C5 2E 0A 45 8B 10 7E -- 0120B0
00 01 B8 03 EB 00 02 B8 05 75 00 01 3D 05 8B 4F -- 0120C0
3E C5 2E 0C 56 8B 0A 46 8B 05 89 4F 8E 3E C5 2E -- 0120D0
00 00 05 C7 4F 96 3E C5 2E 02 55 89 05 89 4F 92 -- 0120E0
C4 83 00 2C FC B7 9A 0A 76 FF 0C 76 FF 0E 76 FF -- 0120F0
B8 03 EB 00 01 B8 05 74 00 48 7D 80 10 7E C5 06 -- 012100
C8 57 56 CB 5E 5F C9 05 89 4F 9A 3E C5 2E FF FF -- 012110
16 7E C5 05 89 4F 8E 3E C5 2E 22 46 8B 00 00 6E -- 012120
48 45 8A 16 7E C5 05 89 4F 8A 3E C5 2E 0A 45 8B -- 012130
FF FF AE 46 C7 05 75 00 AE 7E 83 AE 46 89 E4 2A -- 012140
46 89 D8 F7 AE 46 8B 08 75 01 05 7D 80 16 7E C5 -- 012150
56 8B 0A 46 8B 05 89 4F 9A 3E C5 2E AE 46 8B AE -- 012160
3D 83 2C 7E C5 02 55 89 05 89 4F 92 3E C5 2E 0C -- 012170
89 4F 9E 3E C5 2E C0 2B 02 EB 00 01 B8 05 74 00 -- 012180
05 8B 2C 7E C5 0A 74 00 02 3D 05 8B 2C 7E C5 05 -- 012190
46 8B 00 01 05 C7 4F 96 3E C5 2E 2A 75 00 03 3D -- 0121A0
46 C7 02 55 89 05 89 4F A2 3E C5 2E 10 56 8B 0E -- 0121B0
2E 0F EB 05 89 4F A6 3E C5 2E 12 46 8B FE 04 B4 -- 0121C0
76 FF B4 46 89 12 46 8B 00 00 05 C7 4F 96 3E C5 -- 0121D0
C5 06 C4 83 00 2C FC B7 9A 0A 76 FF 0C 76 FF B4 -- 0121E0
E4 2A 93 46 88 C0 2B 0C 75 00 03 3D 05 8B 2C 7E -- 0121F0

35 72 0A 49 7D 80 16 7E C5 68 EB AC 46 89 01 FE -- 012200
0A 49 7D 80 16 7E C5 2C 77 0F 49 7D 80 16 7E C5 -- 012210
7D 80 16 7E C5 09 74 0C 49 7D 80 16 7E C5 12 74 -- 012220
46 C7 93 46 88 C0 2B 02 EB 00 01 B8 05 75 0E 49 -- 012230
7E C5 12 74 01 49 7D 80 16 7E C5 2A EB 00 01 AC -- 012240
05 75 05 49 7D 80 16 7E C5 09 74 03 49 7D 80 16 -- 012250
C5 00 00 AC 46 C7 93 46 88 C0 2B 02 EB 00 01 B8 -- 012260
E0 C1 B2 46 8B B0 46 89 B2 46 89 46 45 8B 16 7E -- 012270
AA 56 89 A8 46 89 02 C4 83 00 64 4E 56 9A 50 02 -- 012280
89 02 C4 83 00 64 4E 56 9A 50 02 E0 C1 B2 46 8B -- 012290
02 C4 83 00 64 4E 56 9A B2 76 FF A6 56 89 A4 46 -- 0122A0
76 FF A8 76 FF AA 76 FF 57 56 9A 56 89 98 46 89 -- 0122B0
00 5C FE EC 9A 50 02 E0 C1 B2 46 8B 1A 76 FF 1C -- 0122C0
1E 76 FF 20 76 FF A4 76 FF A6 76 FF 57 56 5E 5F -- 0122D0
57 56 5E 5F 00 5C FE EC 9A 50 02 E0 C1 B2 46 8B -- 0122E0
9A B2 76 FF 50 E4 2A 93 46 8A 98 76 FF 9A 76 FF -- 0122F0
E9 03 75 05 49 7D 80 16 7E C5 5E 5F 00 8C 00 02 -- 012300
7E C5 01 90 E9 03 75 0E 49 7D 80 16 7E C5 01 9C -- 012310
50 B6 46 8D 16 01 83 E9 03 75 00 03 3D 05 8B 2C -- 012320
46 8B 08 C4 83 00 5C 4D 6C 9A 28 76 FF 2A 76 FF -- 012330
```

```
A0 46 8D 16 50 9C 46 8D 16 B2 76 FF B2 46 01 FC -- 012340
00 01 B8 06 75 C0 0B 0A C4 83 00 64 59 50 9A 50 -- 012350
46 89 02 C4 83 00 64 4E 56 9A B2 76 FF 02 36 E9 -- 012360
FF AA 76 FF A0 76 FF A2 76 FF 57 56 96 56 89 94 -- 012370
5E 5F 00 5C FE EC 9A 50 02 E0 C1 B0 46 8B A8 76 -- 012380
46 8B A4 76 FF A6 76 FF 9C 76 FF 9E 76 FF 57 56 -- 012390
76 FF 57 56 5E 5F 00 5C FE EC 9A 50 02 E0 C1 B0 -- 0123A0
FE EC 9A B0 76 FF 98 76 FF 9A 76 FF 94 76 FF 96 -- 0123B0
83 00 64 4E E3 9A A8 76 FF AA 76 FF 5E 5F 00 5C -- 0123C0
04 C4 83 00 64 4E E3 9A A4 76 FF A6 76 FF 04 C4 -- 0123D0
46 8B 04 C4 83 00 64 4E E3 9A 98 76 FF 9A 76 FF -- 0123E0
9E 56 8B 9C 46 8B AA 56 89 A8 46 89 A2 56 8B A0 -- 0123F0
46 89 96 56 8B 94 46 8B A6 56 89 A4 46 89 01 FE -- 012400
A6 56 8B A4 46 03 02 E0 C1 B0 46 8B 9A 56 89 98 -- 012410
50 52 AA 56 8B A8 46 03 02 E0 C1 B0 46 8B 50 52 -- 012420
5C 4E 04 9A 28 76 FF 2A 76 FF 24 76 FF 26 76 FF -- 012430
18 74 03 FF 7E 80 1E 74 01 FF 7E 80 10 C4 83 00 -- 012440
0A FF 7E 80 0C 74 0C FF 7E 80 12 74 05 FF 7E 80 -- 012450
88 C0 2B 02 EB 00 01 B8 05 75 0E FF 7E 80 06 74 -- 012460
8A 50 52 9A 56 8B 98 46 03 B0 46 8B 57 56 93 46 -- 012470
8B 5E 5F 00 8C 00 02 9A FC 76 FF 50 E4 2A 93 46 -- 012480
74 06 FF 7E 80 15 74 05 FF 7E 80 B0 46 89 B2 46 -- 012490
FE 7D E9 03 74 0F FF 7E 80 09 74 0E FF 7E 80 0F -- 0124A0
FF 1F 74 00 AC 7E 83 00 00 05 C7 4F AA 3E C5 2E -- 0124B0
76 FF A4 76 FF A6 76 FF 98 76 FF 9A 76 FF B2 76 -- 0124C0
76 FF 1D EB 0E C4 83 00 1C 1C D9 9A A8 76 FF AA -- 0124D0
AA 76 FF A4 76 FF A6 76 FF 98 76 FF 9A 76 FF B2 -- 0124E0
76 FF AA 76 FF 0E C4 83 00 1C 0E 4C 9A A8 76 FF -- 0124F0
9A A4 76 FF A6 76 FF 04 C4 83 00 64 4E E3 9A A8 -- 012500
4E E3 9A 98 76 FF 9A 76 FF 04 C4 83 00 64 4E E3 -- 012510
2E 2A 74 00 3D 83 4F 96 3E C5 2E 04 C4 83 00 64 -- 012520
3D 80 4F 82 3E C5 2E 20 74 00 3D 83 4F 4E 3E C5 -- 012530
AE 36 FF 2E 4F B0 36 FF 2E 07 6A 07 6A 16 74 00 -- 012540
3D 83 4F 9E 3E C5 2E 08 C4 83 00 5C 97 1E 9A 4F -- 012550
3E C5 2E 27 74 00 3D 83 4F 96 3E C5 2E 1D 74 00 -- 012560
14 EB 00 00 05 C7 2C 7E C5 1D 75 00 3D 83 4F AA -- 012570
C5 04 03 26 05 8B 4F 46 3E C5 2E 4F 4A 36 C4 2E -- 012580
56 CB 5E 5F C9 05 8B 4F 4E 3E C5 2E 05 89 2C 7E -- 012590

3E C5 2E EC 8B 55 57 56 CB 5E 5F C9 EC 8B 55 57 -- 0125A0
36 FF 2E 07 6A 1B 6A 1B 6A 18 74 00 3D 80 4F 82 -- 0125B0
2E 0A C4 83 00 5C 97 1E 9A 4F B2 36 FF 2E 4F B4 -- 0125C0
04 6B 4F 46 36 C5 2E C8 8B 2E 04 6B 4F 4A 36 C5 -- 0125D0
8B 55 57 56 CB 5E 5F C9 99 C7 8B F9 03 F8 8B 18 -- 0125E0
3E C5 2E 05 89 0E 7E C5 05 8B 4F 4A 3E C5 2E EC -- 0125F0
56 CB 5E 5F C9 05 89 0A 7E C5 05 8B 4F 46 01 FE -- 012600
64 24 00 9A 01 6A 50 DC 46 8D 16 00 00 24 C8 57 -- 012610
05 88 4F 82 3E C5 2E E4 2A FF 46 8A 06 C4 83 00 -- 012620
C2 3E C5 2E C0 2B 05 89 4E D6 3E C5 2E 0A 46 8B -- 012630
28 74 01 0A 7E 83 05 89 4E C6 3E C5 2E 05 89 4E -- 012640
05 C7 4E DA 3E C5 2E 00 00 05 C7 4E F2 3E C5 2E -- 012650
89 4F 46 3E C5 2E C0 2B 10 75 02 0A 7E 83 00 00 -- 012660
8B 55 57 56 CB 5E 5F C9 05 89 4F 4A 3E C5 2E 05 -- 012670
57 56 CB 5E 5F C9 00 00 05 C7 4E DA 3E C5 2E EC -- 012680
C5 2E 62 75 00 3D 83 4F B6 3E C5 2E 00 00 4A C8 -- 012690
50 75 00 0A 7E 83 06 74 00 02 3D 05 8B 4E C6 3E -- 0126A0
02 E7 C1 47 3D 8B 4E D2 3E C5 2E 4E FA 36 C4 2E -- 0126B0
C4 2E BE 5E D9 9B 05 D9 9B 02 5C 8E 26 3C 03 26 -- 0126C0
03 26 02 E7 C1 47 3D 8B 4E D2 3E C5 2E 4E FE 36 -- 0126D0
4D D0 46 C6 C2 5E D9 9B 05 D9 9B 02 5C 8E 26 3C -- 0126E0
```

90

```
06 C4 83 00 54 BC 7B 9A 50 B6 46 8D 16 0A 76 FF  --  0126F0
00 FE F0 86 C7 00 01 10 C8 57 56 CB 5E 5F C9 9B  --  012700
05 89 4E C6 3E C5 2E C0 2B 4B 75 01 0A 7E 83 00  --  012710
C4 83 00 34 50 04 9A 01 6A 05 89 4E C2 3E C5 2E  --  012720
05 D9 9B 3D C5 4E FA 3E C5 2E 4D FF 5E 86 C6 02  --  012730
9B 05 D9 9B 3D C5 4E FE 3E C5 2E FF 48 9E D9 9B  --  012740
83 00 1C 28 94 9A 50 FF 40 86 8D 16 FF 4C 9E D9  --  012750
2E 01 AA E9 03 75 00 3D 83 4E F2 3E C5 2E 04 C4  --  012760
C7 09 75 02 0A 7E 83 01 8C E9 05 8B 4E C6 3E C5  --  012770
3E C5 2E 4E CE 36 C4 2E 01 91 E9 00 01 FE F0 86  --  012780
C5 2E 01 05 C6 02 5C 8E 26 3C 03 26 3D 8B 4E CA  --  012790
2E 00 01 B8 05 89 4E D2 3E C5 2E 05 8B 4E CA 3E  --  0127A0
01 59 E9 05 89 4E C2 3E C5 2E 05 89 4E C6 3E C5  --  0127B0
2E 01 4A E9 00 01 FE F0 86 C7 09 75 02 0A 7E 83  --  0127C0
8E 26 3C 03 26 3D 8B 4E CA 3E C5 2E 4E CE 36 C4  --  0127D0
2E 4E FA 36 C4 2E 4D FF 10 86 C6 02 05 C6 02 5C  --  0127E0
5C 8E 26 3C 03 26 02 E7 C1 47 3D 8B 4E D2 3E C5  --  0127F0
4E FE 36 C4 2E FE FE 9E D9 9B 05 D9 9B 02 01 FE  --  012800
8E 26 3C 03 26 02 E7 C1 47 3D 8B 4E D2 3E C5 2E  --  012810
3E C5 2E 00 02 B8 FF 02 9E D9 9B 05 D9 9B 02 5C  --  012820
86 8D 16 01 6A 05 89 4E C2 3E C5 2E 05 89 4E C6  --  012830
00 6A 00 CD E9 06 C4 83 00 54 BC 7B 9A 50 FE F6  --  012840
C4 2E 50 FF 40 86 8D 16 02 C4 83 00 1C 19 66 9A  --  012850
04 03 26 02 E0 C1 05 8B 4E D2 3E C5 2E 4E FE 36  --  012860
4E D2 3E C5 2E 4E FA 36 C4 2E 50 52 02 54 8B 26  --  012870
75 9A 50 52 02 54 8B 26 04 03 26 02 E0 C1 05 8B  --  012880
04 9A FE F4 B6 FF FE F4 86 89 0C C4 83 00 1C 36  --  012890
86 FF 04 EB 00 00 FE F2 86 C7 02 C4 83 00 34 50  --  0128A0
FE F2 86 8B 1A 7D FE F4 86 3B FE F2 86 8B FE F2  --  0128B0
1C 28 94 9A 50 52 00 C0 2D D2 8C C5 03 05 E0 C1  --  0128C0
01 B8 02 05 83 4E D2 3E C5 2E D8 EB 04 C4 83 00  --  0128D0
2E 05 89 4E C2 3E C5 2E 05 89 4E C6 3E C5 2E 00  --  0128E0
8E 26 3C 03 26 3D 8B 4E CA 3E C5 2E 4E CE 36 C4  --  0128F0
D8 8B E0 D1 0F 77 00 02 3D 14 EB 01 05 C6 02 5C  --  012900
4E F2 3E C5 2E 1B 24 1A 98 1A 51 1B EB A7 FF 2E  --  012910
83 00 CF E9 03 75 00 FE F0 BE 83 0A 74 00 3D 83  --  012920
83 00 34 50 04 9A 01 6A 00 C6 E9 03 75 01 0A 7E  --  012930

C1 4F 3D 8B 4E CA 3E C5 2E 4E FA 36 C4 2E 02 C4  --  012940
40 9E D9 9B 05 D9 9B 02 5C 8E 26 3C 03 26 02 E7  --  012950
E7 C1 4F 3D 8B 4E CA 3E C5 2E 4E FE 36 C4 2E FF  --  012960
FF 44 9E D9 9B 05 D9 9B 02 5C 8E 26 3C 03 26 02  --  012970
26 02 E7 C1 3D 8B 4E CA 3E C5 2E 4E FA 36 C4 2E  --  012980
C4 2E FF 48 9E D9 9B 05 D9 9B 02 5C 8E 26 3C 03  --  012990
3C 03 26 02 E7 C1 3D 8B 4E CA 3E C5 2E 4E FE 36  --  0129A0
FF 5E 86 C6 FF 4C 9E D9 9B 05 D9 9B 02 5C 8E 26  --  0129B0
2E 04 C4 83 00 1C 28 94 9A 50 FF 40 86 8D 16 4C  --  0129C0
26 3C 03 26 4F 3D 8B 4E CA 3E C5 2E 4E CE 36 C4  --  0129D0
C5 2E 4E CE 36 C4 2E E4 2A 05 88 C0 2B 02 5C 8E  --  0129E0
C9 9B 05 88 02 5C 8E 26 3C 03 26 3D 8B 4E CA 3E  --  0129F0
4F 4E 3E C5 2E 00 00 C6 C8 57 56 CB 5E 5F 01 FE  --  012A00
4E FF 02 C4 83 00 1C 18 E7 9A 02 6A 00 00 05 C7  --  012A10
0A 46 83 FF 3E 86 FF 0F EB 00 00 FF 3E 86 C7 16  --  012A20
7C 16 46 3B FF 3E 86 8B 12 46 FF 04 0E 46 83 04  --  012A30
40 86 8D 16 60 74 00 3D 80 12 7E C5 00 AC E9 03  --  012A40
75 9A 0A 76 FF 0C 76 FF 0E 76 FF 10 76 FF 50 FF  --  012A50
00 00 FF 3A 86 C7 FF 3C 86 89 0C C4 83 00 1C 36  --  012A60
1A 7D FF 3C 86 3B FF 3A 86 8B FF 3A 86 FF 04 EB  --  012A70
50 52 00 C0 2D D2 8C C5 03 05 E0 C1 FF 3A 86 8B  --  012A80
46 83 04 0A 46 83 D8 EB 04 C4 83 00 1C 28 94 9A  --  012A90
```

91

```
9B  0A  7E  C5  FF  7D  E9  12  46  FF  FF  3E  86  FF  04  0E  --  012AA0
9E  D9  9B  05  D9  9B  0E  7E  C5  FF  40  9E  D9  9B  05  D9  --  012AB0
7E  C5  FF  48  9E  D9  9B  04  45  D9  9B  0A  7E  C5  FF  44  --  012AC0
16  4C  FF  5E  86  C6  FF  4C  9E  D9  9B  04  45  D9  9B  0E  --  012AD0
FF  39  E9  04  C4  83  00  1C  28  94  9A  50  FF  40  86  8D  --  012AE0
80  4F  82  3E  C5  2E  22  74  00  3D  83  4F  4E  3E  C5  2E  --  012AF0
2E  4F  BC  36  FF  2E  07  6A  1B  6A  1B  6A  18  74  00  3D  --  012B00
5E  5F  C9  9B  0A  C4  83  00  5C  97  1E  9A  4F  BA  36  FF  --  012B10
00  FA  46  C7  00  00  FC  46  C7  00  00  34  C8  57  56  CB  --  012B20
7A  E9  00  FF  B8  06  75  00  3D  83  4E  F2  3E  C5  2E  00  --  012B30
74  00  12  7E  83  0A  5A  E9  05  8B  4E  DA  3E  C5  2E  0A  --  012B40
3E  C5  2E  05  D9  9B  0A  7E  C5  0A  64  E9  00  64  B8  06  --  012B50
4F  16  3E  C5  2E  05  D9  9B  0E  7E  C5  1D  D9  9B  4F  16  --  012B60
4F  1A  3E  C5  2E  04  45  D9  9B  0A  7E  C5  04  5D  D9  9B  --  012B70
9B  4F  1A  3E  C5  2E  04  45  D9  9B  0E  7E  C5  1D  D9  9B  --  012B80
E9  00  67  B8  00  02  05  C7  4E  DA  3E  C5  2E  04  5D  D9  --  012B90
C5  2E  D0  5E  D9  9B  05  D9  9B  4F  16  3E  C5  2E  0A  19  --  012BA0
4F  1A  3E  C5  2E  DC  5E  D9  9B  04  45  D9  9B  4F  16  3E  --  012BB0
04  45  D9  9B  4F  1A  3E  C5  2E  D4  5E  D9  9B  05  D9  9B  --  012BC0
4F  1E  3E  C5  2E  04  45  D9  9B  0A  7E  C5  E0  5E  D9  9B  --  012BD0
C5  2E  04  45  D9  9B  0E  7E  C5  D8  5E  D9  9B  15  D9  9B  --  012BE0
50  F8  46  8D  16  E4  5E  D9  9B  04  55  D9  9B  4F  1E  3E  --  012BF0
2C  36  FF  2E  4F  2E  36  FF  2E  4F  30  36  FF  2E  01  FE  --  012C00
4F  26  36  FF  2E  4F  28  36  FF  2E  4F  2A  36  FF  2E  4F  --  012C10
83  00  1C  40  12  9A  50  D0  46  8D  16  50  EC  46  8D  16  --  012C20
05  C7  4E  DA  3E  C5  2E  05  89  4F  22  3E  C5  2E  18  C4  --  012C30
6A  4C  1E  45  C6  14  7E  C5  45  74  00  F8  7E  83  00  03  --  012C40
76  FF  16  76  FF  4F  16  36  FF  2E  4F  18  36  FF  2E  08  --  012C50
4F  1C  36  FF  2E  08  6A  0A  C4  83  00  5C  ED  6E  9A  14  --  012C60
9A  50  00  08  05  14  46  8B  16  76  FF  4F  1A  36  FF  2E  --  012C70
3E  C5  2E  09  30  E9  01  91  B8  0A  C4  83  00  5C  ED  6E  --  012C80
52  3E  C5  2E  00  A3  E9  03  74  00  02  3D  05  8B  4E  D6  --  012C90
4F  26  3E  C5  2E  00  94  E9  03  75  FF  FF  3D  05  8B  4F  --  012CA0
4F  26  3E  C5  2E  EC  46  D9  9B  CC  5E  D9  9B  05  D9  9B  --  012CB0
35  FF  4F  5A  3E  C5  2E  14  76  FF  16  76  FF  1D  D9  9B  --  012CC0
2E  4F  18  36  FF  2E  4F  1A  36  FF  2E  4F  1C  36  FF  2E  --  012CD0

89  18  7E  C5  0E  C4  83  00  1C  31  B1  9A  4F  16  36  FF  --  012CE0
36  FF  2E  4F  16  36  FF  2E  4F  18  36  FF  2E  16  6A  05  --  012CF0
6A  0A  C4  83  00  5C  ED  6E  9A  4F  BE  36  FF  2E  4F  C0  --  012D00
4F  C4  36  FF  2E  4F  1A  36  FF  2E  4F  1C  36  FF  2E  16  --  012D10
46  D9  9B  0A  C4  83  00  5C  ED  6E  9A  4F  C2  36  FF  2E  --  012D20
2E  08  7E  E9  00  CA  B8  1D  D9  9B  4F  26  3E  C5  2E  CC  --  012D30
4F  1E  3E  C5  2E  D0  5E  D9  9B  05  D9  9B  4F  1E  3E  C5  --  012D40
05  D9  9B  4F  1A  3E  C5  2E  DC  5E  D9  9B  04  45  D9  9B  --  012D50
5E  D9  9B  04  45  D9  9B  4F  1A  3E  C5  2E  D4  5E  D9  9B  --  012D60
3E  C5  2E  D8  5E  D9  9B  05  D9  9B  4F  16  3E  C5  2E  E0  --  012D70
D0  46  8D  16  02  6A  E4  5E  D9  9B  04  45  D9  9B  4F  16  --  012D80
14  76  FF  16  76  FF  50  04  C4  83  00  64  34  23  9A  50  --  012D90
2E  4F  1C  36  FF  2E  4F  16  36  FF  2E  4F  18  36  FF  2E  --  012DA0
E9  00  66  B8  10  C4  83  00  1C  48  82  9A  4F  1A  36  FF  --  012DB0
C5  2E  D0  5E  D9  9B  05  D9  9B  4F  1A  3E  C5  2E  07  FB  --  012DC0
4F  1E  3E  C5  2E  DC  5E  D9  9B  04  45  D9  9B  4F  1A  3E  --  012DD0
04  45  D9  9B  4F  1E  3E  C5  2E  D4  5E  D9  9B  05  D9  9B  --  012DE0
4F  C6  3E  C5  2E  04  45  D9  9B  0A  7E  C5  E0  5E  D9  9B  --  012DF0
04  45  D9  9B  0E  7E  C5  D8  5E  D9  9B  15  D9  9B  01  FE  --  012E00
46  8D  16  E4  5E  D9  9B  04  55  D9  9B  4F  C6  3E  C5  2E  --  012E10
D4  36  FF  2E  4F  D6  36  FF  2E  4F  D8  36  FF  2E  50  F8  --  012E20
4F  D0  36  FF  2E  50  E8  46  8D  16  4F  D2  36  FF  2E  4F  --  012E30
83  00  1C  40  12  9A  50  D0  46  8D  16  4F  CE  36  FF  2E  --  012E40
```

EP 0 533 348 A2

```
E9 03 75 00 F8 7E 83 05 89 4F CA 3E C5 2E 18 C4  --  012E50
38 E9 03 74 00 CA 3D 05 8B 4E E6 3E C5 2E 05 5F  --  012E60
00 34 4A 88 9A 01 59 E9 05 8B 4E D6 3E C5 2E 02  --  012E70
3E C5 2E F6 46 FF 03 EB 00 00 F6 46 C7 01 61 E9  --  012E80
96 3E C5 2E 01 48 E9 03 7C 05 3B F6 46 8B 4E EA  --  012E90
05 8B 02 55 8B 4F 92 3E C5 2E 15 74 00 3D 83 4F  --  012EA0
E7 C1 F6 7E 8B F2 56 89 F0 46 89 D2 2B FF FF 25  --  012EB0
E9 98 1E 45 8A 4E E4 1E 8E 2E 4E E2 3E 03 2E 05  --  012EC0
28 F0 6E 83 4D 74 00 3D 83 4F 96 3E C5 2E 00 F2  --  012ED0
C7 4F AA 3E C5 2E 3F 79 00 F2 7E 83 00 F2 5E 83  --  012EE0
3E C5 2E 02 55 8B 05 8B 4F DA 3E C5 2E 00 00 05  --  012EF0
74 00 3D 80 4F 82 3E C5 2E 02 55 89 05 89 4F 92  --  012F00
DE 36 FF 2E 4F E0 36 FF 2E 0E 76 FF 10 76 FF 18  --  012F10
3D 83 4F 9E 3E C5 2E 08 C4 83 00 5C 97 1E 9A 4F  --  012F20
46 8B F4 46 89 00 18 B8 03 EB 00 28 B8 05 74 00  --  012F30
4F 96 3E C5 2E FF 3F E9 05 29 4F 92 3E C5 2E F4  --  012F40
F2 7E 83 00 F2 5E 83 52 F0 6E 83 4D 74 00 3D 83  --  012F50
DA 3E C5 2E 00 00 05 C7 4F AA 3E C5 2E 3F 79 00  --  012F60
02 55 89 05 89 4F 92 3E C5 2E 02 55 8B 05 8B 4F  --  012F70
0E 76 FF 10 76 FF 18 74 00 3D 80 4F 82 3E C5 2E  --  012F80
83 00 5C 97 1E 9A 4F E2 36 FF 2E 4F E4 36 FF 2E  --  012F90
EB 00 52 B8 05 74 00 3D 83 4F 9E 3E C5 2E 08 C4  --  012FA0
29 4F 92 3E C5 2E F4 46 8B F4 46 89 00 2E B8 03  --  012FB0
01 E9 03 75 00 4C 3D 82 74 00 41 3D FE C6 E9 05  --  012FC0
75 00 02 3D FE 9F E9 03 75 00 01 3D FE B6 E9 FF  --  012FD0
C5 2E 02 BC FC 46 C7 00 08 FA 46 C7 FE 9F E9 03  --  012FE0
10 75 C0 0B 05 89 4F E6 3E C5 2E 05 8B 4F CA 3E  --  012FF0
9B 4F EA 3E C5 2E 05 D9 9B 4F D2 3E C5 2E 01 FE  --  013000
0D D8 9B 4F EE 3E C5 2E 4F 6A 06 DD 2E 9B 1D D9  --  013010
2E D0 5E D9 9B 05 D9 9B 4F 56 3E C5 2E 1D D9 9B  --  013020
BE 3E C5 2E DC 5E D9 9B 04 45 D9 9B 4F 56 3E C5  --  013030
45 D9 9B 4F BE 3E C5 2E D4 5E D9 9B 05 D9 9B 4F  --  013040
5E D9 9B 05 D9 9B 4F C2 3E C5 2E E0 5E D9 9B 04  --  013050
8D 16 E4 5E D9 9B 04 45 D9 9B 4F C2 3E C5 2E D8  --  013060
76 FF FE 46 89 04 C4 83 00 64 34 23 9A 50 D0 46  --  013070

C2 36 FF 2E 4F C4 36 FF 2E FE 76 FF 14 76 FF 16  --  013080
00 1C 31 B1 9A 4F BE 36 FF 2E 4F C0 36 FF 2E 4F  --  013090
4E E6 3E C5 2E 01 F2 E9 05 89 18 7E C5 0E C4 83  --  0130A0
18 36 FF 2E 16 6A 01 E3 E9 03 74 00 66 3D 05 8B  --  0130B0
4F 56 36 FF 2E 4F 58 36 FF 2E 4F 16 36 FF 2E 4F  --  0130C0
2E 4F 1C 36 FF 2E 16 6A 0A C4 83 00 5C ED 6E 9A  --  0130D0
6E 9A 4F BE 36 FF 2E 4F C0 36 FF 2E 4F 1A 36 FF  --  0130E0
36 FF 2E 4F 20 36 FF 2E 16 6A 0A C4 83 00 5C ED  --  0130F0
5C ED 6E 9A 4F C2 36 FF 2E 4F C4 36 FF 2E 4F 1E  --  013100
05 75 00 01 3D 05 8B 4E D6 3E C5 2E 0A C4 83 00  --  013110
5E D9 9B 05 D9 9B 4F 56 3E C5 2E 00 34 4A 88 9A  --  013120
C5 2E DC 5E D9 9B 04 45 D9 9B 4F 56 3E C5 2E D0  --  013130
9B 4F BE 3E C5 2E D4 5E D9 9B 05 D9 9B 4F BE 3E  --  013140
C5 2E 04 45 D9 9B 0A 7E C5 E0 5E D9 9B 04 45 D9  --  013150
45 D9 9B 0E 7E C5 D8 5E D9 9B 15 D9 9B 4F C2 3E  --  013160
8D 16 E4 5E D9 9B 04 55 D9 9B 4F C2 3E C5 2E 04  --  013170
36 FF 2E 4F FE 36 FF 2E 50 00 36 FF 2E 50 F8 46  --  013180
F6 36 FF 2E 4F F8 36 FF 2E 4F FA 36 FF 2E 4F FC  --  013190
00 1C 40 12 9A 50 D0 46 8D 16 50 EC 46 8D 16 4F  --  0131A0
8B 4F E6 3E C5 2E 05 89 4F F2 3E C5 2E 18 C4 83  --  0131B0
EA 3E C5 2E 10 75 C0 0B 05 89 4F F2 3E C5 2E 05  --  0131C0
06 DD 2E 9B 1D D9 9B 4F FA 3E C5 2E 05 D9 9B 4F  --  0131D0
3E C5 2E 1D D9 9B 0D D8 9B 4F F6 3E C5 2E 4F 6A  --  0131E0
D9 9B 4F C2 3E C5 2E D0 5E D9 9B 05 D9 9B 4F C2  --  0131F0
```

```
05 D9 9B 4F BE 3E C5 2E DC 5E D9 9B 04 45 01 FE -- 013200
5E D9 9B 04 45 D9 9B 4F BE 3E C5 2E D4 5E D9 9B -- 013210
3E C5 2E D8 5E D9 9B 05 D9 9B 4F 56 3E C5 2E E0 -- 013220
EB 00 00 F6 46 C7 E4 5E D9 9B 04 45 D9 9B 4F 56 -- 013230
05 E7 C1 F6 7E 8B 12 7D 08 F6 7E 83 F6 46 FF 03 -- 013240
8D 16 02 6A E5 EB 45 1E 45 C6 16 5E 8E 14 7E 03 -- 013250
FF 16 76 FF 50 04 C4 83 00 64 34 23 9A 50 D0 46 -- 013260
C0 36 FF 2E 4F 56 36 FF 2E 4F 58 36 FF 2E 14 76 -- 013270
7E C5 10 C4 83 00 1C 48 82 9A 4F BE 36 FF 2E 4F -- 013280
8B 02 BC FC 46 C7 00 08 FA 46 C7 00 02 05 C7 18 -- 013290
6A 4C 1E 45 C6 16 5E 8E 14 7E 03 05 E7 C1 FA 7E -- 0132A0
E0 C1 FA 46 8B 4F 1A 36 FF 2E 4F 1C 36 FF 2E 08 -- 0132B0
C4 83 00 5C ED 6E 9A 50 52 16 56 8B 14 46 03 05 -- 0132C0
FA 46 8B 4F 1E 36 FF 2E 4F 20 36 FF 2E 08 6A 0A -- 0132D0
C3 8B 51 CA 8B D8 8B 16 56 8B 14 46 03 05 E0 C1 -- 0132E0
FF 2E 16 6A 0A C4 83 00 5C ED 6E 9A 50 00 08 05 -- 0132F0
36 FF 2E 4F 58 36 FF 2E 4F 16 36 FF 2E 4F 18 36 -- 013300
1C 36 FF 2E 16 6A 0A C4 83 00 5C ED 6E 9A 4F 56 -- 013310
4F BE 36 FF 2E 4F C0 36 FF 2E 4F 1A 36 FF 2E 4F -- 013320
2E 4F 20 36 FF 2E 16 6A 0A C4 83 00 5C ED 6E 9A -- 013330
6E 9A 4F C2 36 FF 2E 4F C4 36 FF 2E 4F 1E 36 FF -- 013340
36 FF 2E 4F 1C 36 FF 2E 16 6A 0A C4 83 00 5C ED -- 013350
5C ED 6E 9A 4F 16 36 FF 2E 4F 18 36 FF 2E 4F 1A -- 013360
4F 1E 36 FF 2E 4F 20 36 FF 2E 16 6A 0A C4 83 00 -- 013370
83 00 5C ED 6E 9A 4F 1A 36 FF 2E 4F 1C 36 FF 2E -- 013380
FF 2E 4F C6 36 FF 2E 4F C8 36 FF 2E 16 6A 0A C4 -- 013390
0A C4 83 00 5C ED 6E 9A 4F 1E 36 FF 2E 4F 20 36 -- 0133A0
05 FC 46 8B 1D D9 9B 4F 26 3E C5 2E E8 46 D9 9B -- 0133B0
74 03 85 3D 05 8B 4E E6 3E C5 2E 01 FE E9 00 C9 -- 0133C0
3E C5 2E 0C 74 00 C9 3D 05 8B 4E E6 3E C5 2E 18 -- 0133D0
05 8B 4F 22 3E C5 2E 77 75 01 91 3D 05 8B 4E E6 -- 0133E0
4F 2A 3E C5 2E 10 75 C0 0B 05 89 4F CA 3E C5 2E -- 0133F0
DD 2E 9B 1D D9 9B 4F D2 3E C5 2E 05 D9 9B 01 FE -- 013400
45 C6 14 7E C5 E8 5E D9 9B E8 4E D8 9B 4F 6A 06 -- 013410

76 FF 4F 1A 36 FF 2E 4F 1C 36 FF 2E 08 6A 4C 1E -- 013420
FF 2E 08 6A 0A C4 83 00 5C ED 6E 9A 14 76 FF 16 -- 013430
08 05 14 46 8B 16 76 FF 4F 1E 36 FF 2E 4F 20 36 -- 013440
E9 02 BC FC 46 C7 0A C4 83 00 5C ED 6E 9A 50 00 -- 013450
C5 2E D0 5E D9 9B 05 D9 9B 4F 16 3E C5 2E 00 85 -- 013460
4F 1A 3E C5 2E DC 5E D9 9B 04 45 D9 9B 4F 16 3E -- 013470
04 45 D9 9B 4F 1A 3E C5 2E D4 5E D9 9B 05 D9 9B -- 013480
D8 5E D9 9B 05 D9 9B 4F 1E 3E C5 2E E0 5E D9 9B -- 013490
46 8D 16 E4 5E D9 9B 04 45 D9 9B 4F 1E 3E C5 2E -- 0134A0
16 76 FF FE 46 89 04 C4 83 00 64 34 23 9A 50 D0 -- 0134B0
4F 1E 36 FF 2E 4F 20 36 FF 2E FE 76 FF 14 76 FF -- 0134C0
83 00 1C 31 B1 9A 4F 1A 36 FF 2E 4F 1C 36 FF 2E -- 0134D0
FF 2E 4F 18 36 FF 2E 16 6A 05 89 18 7E C5 0E C4 -- 0134E0
ED 6E 9A 4F 56 36 FF 2E 4F 58 36 FF 2E 4F 16 36 -- 0134F0
1A 36 FF 2E 4F 1C 36 FF 2E 16 6A 0A C4 83 00 5C -- 013500
00 5C ED 6E 9A 4F BE 36 FF 2E 4F C0 36 FF 2E 4F -- 013510
2E 4F 1E 36 FF 2E 4F 20 36 FF 2E 16 6A 0A C4 83 -- 013520
C4 83 00 5C ED 6E 9A 4F C2 36 FF 2E 4F C4 36 FF -- 013530
36 FF 2E 4F 1A 36 FF 2E 4F 1C 36 FF 2E 16 6A 0A -- 013540
6A 0A C4 83 00 5C ED 6E 9A 4F 16 36 FF 2E 4F 18 -- 013550
4F 1C 36 FF 2E 4F 1E 36 FF 2E 4F 20 36 FF 2E 16 -- 013560
2E 16 6A 0A C4 83 00 5C ED 6E 9A 4F 1A 36 FF 2E -- 013570
FF 2E 4F 20 36 FF 2E 4F C6 36 FF 2E 4F C8 36 FF -- 013580
2E E8 46 D9 9B 0A C4 83 00 5C ED 6E 9A 4F 1E 36 -- 013590
3D 16 EB 00 CA 05 FC 46 8B 1D D9 9B 4F 26 3E C5 -- 0135A0
```

94

```
8F  1E  1F  28  87  A7  FF  2E  D8  8B  E0  D1  11  77  00  03  --  0135B0
00  00  60  C8  57  56  CB  5E  5F  C9  9B  20  94  1E  76  28  --  0135C0
45  D9  9B  0A  7E  C5  F8  5E  D9  9B  05  D9  9B  0A  7E  C5  --  0135D0
F0  5E  D9  9B  08  45  D9  9B  0A  7E  C5  F4  5E  D9  9B  04  --  0135E0
4E  D6  3E  C5  2E  EC  5E  D9  9B  0C  45  D9  9B  0A  7E  C5  --  0135F0
80  0A  7E  C5  05  03  E9  03  74  00  02  3D  05  8B  01  FE  --  013600
00  3D  83  50  02  3E  C5  2E  02  59  E9  03  74  4C  1E  7D  --  013610
9A  F0  5E  D8  9B  F8  46  D9  9B  00  00  D6  46  C7  77  74  --  013620
D9  9B  D8  5E  D9  9B  F8  46  D9  9B  12  73  00  5C  ED  94  --  013630
D8  5E  D9  9B  F0  46  D9  9B  10  EB  DC  5E  D9  9B  F0  46  --  013640
EC  5E  D8  9B  F4  46  D9  9B  DC  5E  D9  9B  F8  46  D9  9B  --  013650
9B  E0  5E  D9  9B  F4  46  D9  9B  12  73  00  5C  ED  94  9A  --  013660
5E  D9  9B  EC  46  D9  9B  10  EB  E4  5E  D9  9B  EC  46  D9  --  013670
3C  9A  50  D8  46  8D  16  E4  5E  D9  9B  F4  46  D9  9B  E0  --  013680
3D  83  4F  9E  3E  C5  2E  01  CE  E9  04  C4  83  00  1C  3F  --  013690
9B  F4  46  D9  9B  C4  5E  DD  9B  F8  46  D9  9B  70  74  00  --  0136A0
9B  EC  46  D9  9B  B4  5E  DD  9B  F0  46  D9  9B  BC  5E  DD  --  0136B0
FF  4F  8A  3E  C5  2E  35  FF  4F  8E  3E  C5  2E  AC  5E  DD  --  0136C0
5C  ED  99  9A  B4  46  DD  9B  35  FF  4F  9A  3E  C5  2E  35  --  0136D0
99  9A  C4  46  DD  9B  00  5C  ED  99  9A  AC  46  DD  9B  00  --  0136E0
94  36  FF  2E  00  5C  ED  99  9A  BC  46  DD  9B  00  5C  ED  --  0136F0
46  89  2A  C4  83  00  2C  D7  95  9A  4F  92  36  FF  2E  4F  --  013700
FF  4F  8A  3E  C5  2E  35  FF  4F  8E  3E  C5  2E  3E  EB  D6  --  013710
46  8D  16  50  F0  46  8D  16  35  FF  4F  9A  3E  C5  2E  35  --  013720
94  36  FF  2E  50  F4  46  8D  16  50  F8  46  8D  16  50  EC  --  013730
46  89  1A  C4  83  00  2C  D7  95  9A  4F  92  36  FF  2E  4F  --  013740
83  4F  96  3E  C5  2E  01  0D  E9  03  75  00  D6  7E  83  D6  --  013750
00  01  05  C7  4F  AA  3E  C5  2E  01  00  E9  03  75  00  3D  --  013760
89  4F  DA  3E  C5  2E  02  55  8B  05  8B  4F  92  3E  C5  2E  --  013770
C5  2E  02  55  8B  05  8B  4F  A2  3E  C5  2E  02  55  89  05  --  013780
2E  35  FF  4F  A6  3E  C5  2E  02  55  89  05  89  4F  92  3E  --  013790
C4  83  00  2C  FC  B7  9A  35  FF  02  75  FF  4F  92  3E  C5  --  0137A0
36  FF  2E  07  6A  14  74  00  3D  80  4F  82  3E  C5  2E  06  --  0137B0

2E  06  C4  83  00  5C  97  1E  9A  50  06  36  FF  2E  50  08  --  0137C0
35  FF  4F  8E  3E  C5  2E  50  74  00  3D  83  4F  9E  3E  C5  --  0137D0
DD  9B  35  FF  4F  9A  3E  C5  2E  35  FF  4F  8A  3E  C5  2E  --  0137E0
00  5C  ED  99  9A  AC  46  DD  9B  00  5C  ED  99  9A  B4  46  --  0137F0
9A  BC  46  DD  9B  00  5C  ED  99  9A  C4  46  DD  9B  01  FE  --  013800
95  9A  4F  92  36  FF  2E  4F  94  36  FF  2E  00  5C  ED  99  --  013810
4F  8E  3E  C5  2E  3E  EB  D6  46  89  2A  C4  83  00  2C  D7  --  013820
35  FF  4F  9A  3E  C5  2E  35  FF  4F  8A  3E  C5  2E  35  FF  --  013830
16  50  F8  46  8D  16  50  EC  46  8D  16  50  F0  46  8D  16  --  013840
95  9A  4F  92  36  FF  2E  4F  94  36  FF  2E  50  F4  46  8D  --  013850
05  FF  4F  46  3E  C5  2E  D6  46  89  1A  C4  83  00  2C  D7  --  013860
00  5C  ED  94  9A  EC  5E  D8  9B  F4  46  D9  9B  02  89  E9  --  013870
0A  7E  C5  D4  46  89  00  01  B8  03  EB  FF  FF  B8  05  76  --  013880
F0  5E  D9  9B  05  D9  9B  0A  7E  C5  2B  74  00  1C  7D  83  --  013890
D9  9B  0A  7E  C5  EC  5E  D9  9B  04  45  D9  9B  0A  7E  C5  --  0138A0
5E  D9  9B  0C  45  D9  9B  0A  7E  C5  F8  5E  D9  9B  08  45  --  0138B0
46  C7  00  BE  E9  03  75  00  3D  83  50  02  3E  C5  2E  F4  --  0138C0
00  5C  ED  94  9A  F0  5E  D8  9B  F8  46  D9  9B  00  00  D6  --  0138D0
D9  9B  F0  46  D9  9B  D8  5E  D9  9B  F8  46  D9  9B  12  73  --  0138E0
F8  46  D9  9B  D8  5E  D9  9B  F0  46  D9  9B  10  EB  DC  5E  --  0138F0
5C  ED  94  9A  EC  5E  D8  9B  F4  46  D9  9B  DC  5E  D9  9B  --  013900
9B  EC  46  D9  9B  E0  5E  D9  9B  F4  46  D9  9B  12  73  00  --  013910
46  D9  9B  E0  5E  D9  9B  EC  46  D9  9B  10  EB  E4  5E  D9  --  013920
0A  76  FF  0C  76  FF  50  E8  46  8D  16  E4  5E  D9  9B  F4  --  013930
E8  46  D9  9B  30  74  C0  0B  08  C4  83  00  1C  3E  40  9A  --  013940
9B  E8  46  D9  9B  0A  76  00  5C  ED  94  9A  DC  5E  D8  9B  --  013950
```

```
ED 94 9A D8 5E D8 9B E8 46 D9 9B 17 EB DC 5E D9 -- 013960
D8 46 8D 16 D8 5E D9 9B E8 46 D9 9B 08 73 00 5C -- 013970
9B EE D9 9B 01 69 E9 04 C4 83 00 1C 3F 3C 9A 50 -- 013980
FF 4F 8A 3E C5 2E 35 FF 4F 8E 3E C5 2E CC 5E DD -- 013990
9A CC 46 DD 9B D4 76 FF 35 FF 4F 9A 3E C5 2E 35 -- 0139A0
76 FF 50 00 18 05 0A 46 8B 0C 76 FF 00 5C ED 99 -- 0139B0
10 05 0A 46 8B 0C 76 FF 50 00 18 05 0A 46 8B 0C -- 0139C0
F0 46 8D 16 50 00 14 05 0A 46 8B 0C 76 FF 50 00 -- 0139D0
50 F4 46 8D 16 50 F8 46 8D 16 50 EC 46 8D 16 50 -- 0139E0
83 00 2C FC F5 9A 4F 92 36 FF 2E 4F 94 36 FF 2E -- 0139F0
00 E7 E9 03 75 00 D6 7E 83 D6 46 89 34 C4 01 FE -- 013A00
3E C5 2E 00 DA E9 03 75 00 3D 83 4F 96 3E C5 2E -- 013A10
02 55 8B 05 8B 4F 92 3E C5 2E 00 01 05 C7 4F AA -- 013A20
8B 4F A2 3E C5 2E 02 55 89 05 89 4F DA 3E C5 2E -- 013A30
C5 2E 02 55 89 05 89 4F 92 3E C5 2E 02 55 8B 05 -- 013A40
9A 35 FF 02 75 FF 4F 92 3E C5 2E 35 FF 4F A6 3E -- 013A50
74 00 3D 80 4F 82 3E C5 2E 06 C4 83 00 2C FC B7 -- 013A60
97 1E 9A 50 0A 36 FF 2E 50 0C 36 FF 2E 07 6A 14 -- 013A70
8A 3E C5 2E 35 FF 4F 8E 3E C5 2E 06 C4 83 00 5C -- 013A80
46 DD 9B D4 76 FF 35 FF 4F 9A 3E C5 2E 35 FF 4F -- 013A90
50 00 18 05 0A 46 8B 0C 76 FF 00 5C ED 99 9A CC -- 013AA0
0A 46 8B 0C 76 FF 50 00 18 05 0A 46 8B 0C 76 FF -- 013AB0
8D 16 50 00 14 05 0A 46 8B 0C 76 FF 50 00 10 05 -- 013AC0
46 8D 16 50 F8 46 8D 16 50 EC 46 8D 16 50 F0 46 -- 013AD0
2C FC F5 9A 4F 92 36 FF 2E 4F 94 36 FF 2E 50 F4 -- 013AE0
7E 83 05 FF 4F 4A 3E C5 2E D6 46 89 34 C4 83 00 -- 013AF0
00 01 05 C7 4F 4E 3E C5 2E 03 E1 E9 03 75 00 D6 -- 013B00
C1 3D 8B 50 0E 3E C5 2E 00 54 C4 7B 9A 03 D5 E9 -- 013B10
55 8B 05 8B 4F 14 1E 8E 2E 4F 12 3E 03 2E 03 E7 -- 013B20
C1 3C 8B 26 50 0E 36 C4 2E A6 56 89 A4 46 89 02 -- 013B30
4A 06 45 6B 4F 14 1E 8E 2E 4F 12 3E 03 2E 03 E7 -- 013B40
8A 0A 7E C5 FE 56 89 FC 46 89 A6 56 8B A4 46 03 -- 013B50

FC 7E C5 F0 46 D9 9B 1A 45 88 FC 7E C5 98 1E 45 -- 013B60
C5 0C 5D D9 9B FC 7E C5 EC 46 D9 9B 08 5D D9 9B -- 013B70
05 FF 4E BE 3E C5 2E 01 0D E9 98 1E 45 8A 0A 7E -- 013B80
9B F0 66 D8 9B F8 46 D9 9B A0 5E DD 9B EE D9 9B -- 013B90
D8 9B F8 46 D9 9B 0A 76 00 5C ED 94 9A A0 5E DC -- 013BA0
9B E0 D9 9B F0 66 D8 9B F8 46 D9 9B 0B EB F0 66 -- 013BB0
C6 FC 7E C5 09 73 00 5C ED 94 9A 50 12 1E DC 2E -- 013BC0
F8 46 D9 9B 00 1B 45 C6 FC 7E C5 26 EB 01 1B 45 -- 013BD0
EC 66 D8 9B F4 46 D9 9B A0 5E DD 9B F0 66 D8 9B -- 013BE0
C5 F8 46 D9 9B 1E 5D D9 9B FC 7E C5 A0 76 DC 9B -- 013BF0
D9 9B FC 7E C5 F4 46 D9 9B 1D D9 9B FC 7E 01 FE -- 013C00
8B FE 76 FF 05 FF 4E BA 3E C5 2E 00 93 E9 04 5D -- 013C10
1C 3E 40 9A 0A 76 FF 0C 76 FF 50 00 22 05 FC 46 -- 013C20
7E C5 F8 46 D9 9B 1C 45 88 FC 7E C5 08 C4 83 00 -- 013C30
C5 04 5D D9 9B FC 7E C5 F4 46 D9 9B 1D D9 9B FC -- 013C40
0A 7E C5 10 5D D9 9B FC 7E C5 10 45 D9 9B 0A 7E -- 013C50
9B F4 46 D9 9B 14 5D D9 9B FC 7E C5 14 45 D9 9B -- 013C60
B8 03 EB FF FF B8 05 76 00 5C ED 94 9A EC 5E D8 -- 013C70
C5 18 45 D9 9B 0A 7E C5 18 45 89 FC 7E C5 00 01 -- 013C80
FF 75 E9 03 75 00 41 3D 10 EB 26 5D D9 9B FC 7E -- 013C90
00 3D 83 4F 06 3E C5 2E FE E3 E9 03 75 00 4C 3D -- 013CA0
01 6A 05 FF 50 1A 3E C5 2E 00 34 2E 7A 9A 0C 74 -- 013CB0
7E C5 06 C4 83 00 54 BC 7B 9A FC 76 FF FE 76 FF -- 013CC0
D8 9B F4 46 D9 9B 01 F9 E9 03 75 4D 1E 7D 80 0A -- 013CD0
FC 7E C5 F8 46 D9 9B 2E 73 00 5C ED 94 9A EC 5E -- 013CE0
9B 2E 5D D9 9B FC 7E C5 F4 46 D9 9B 2A 5D D9 9B -- 013CF0
7E C5 EC 46 D9 9B 32 5D D9 9B FC 7E C5 F0 46 D9 -- 013D00
```

96

```
D9  9B  FC  7E  C5  F0  46  D9  9B  2C  EB  36  5D  D9  9B  FC  --  013D10
46  D9  9B  2E  5D  D9  9B  FC  7E  C5  EC  46  D9  9B  2A  5D  --  013D20
9B  FC  7E  C5  F4  46  D9  9B  32  5D  D9  9B  FC  7E  C5  F8  --  013D30
FC  7E  C5  A0  5E  DD  9B  50  1E  06  DF  2E  9B  36  5D  D9  --  013D40
EE  2F  9A  00  5C  ED  99  9A  A0  4E  DC  9B  2E  45  D9  9B  --  013D50
2E  9B  40  55  89  3E  45  89  FC  7E  C5  08  C4  83  00  5C  --  013D60
9B  36  45  D9  9B  FC  7E  C5  A0  5E  DD  9B  50  1E  06  DF  --  013D70
08  C4  83  00  5C  EE  2F  9A  00  5C  ED  99  9A  A0  4E  DC  --  013D80
5E  D8  9B  F8  46  D9  9B  48  55  89  46  45  89  FC  7E  C5  --  013D90
DD  9B  50  1E  06  DF  2E  9B  52  73  00  5C  ED  94  9A  F0  --  013DA0
9A  00  5C  ED  99  9A  A0  4E  DC  9B  F8  46  D9  9B  A0  5E  --  013DB0
3C  55  89  3A  45  89  FC  7E  C5  08  C4  83  00  5C  EE  2F  --  013DC0
DC  9B  F0  46  D9  9B  A0  5E  DD  9B  50  1E  06  DF  2E  9B  --  013DD0
C5  08  C4  83  00  5C  EE  2F  9A  00  5C  ED  99  9A  A0  4E  --  013DE0
50  1E  06  DF  2E  9B  50  EB  44  55  89  42  45  89  FC  7E  --  013DF0
99  9A  A0  4E  DC  9B  F0  46  D9  9B  A0  5E  DD  9B  01  FE  --  013E00
45  89  FC  7E  C5  08  C4  83  00  5C  EE  2F  9A  00  5C  ED  --  013E10
D9  9B  A0  5E  DD  9B  50  1E  06  DF  2E  9B  3C  55  89  3A  --  013E20
00  5C  EE  2F  9A  00  5C  ED  99  9A  A0  4E  DC  9B  F8  46  --  013E30
80  0A  7E  C5  44  55  89  42  45  89  FC  7E  C5  08  C4  83  --  013E40
2E  9B  72  74  00  1C  7D  80  FC  7E  C5  7B  75  41  1E  7D  --  013E50
9B  22  45  D9  9B  FC  7E  C5  A0  5E  DD  9B  50  1E  06  DF  --  013E60
08  C4  83  00  5C  EE  2F  9A  00  5C  ED  99  9A  A0  4E  DC  --  013E70
3B  AA  56  8B  A8  46  8B  FC  7E  C5  AA  56  89  A8  46  89  --  013E80
56  8B  A8  46  8B  11  73  3A  45  3B  16  7F  07  7C  3C  55  --  013E90
8B  FC  7E  C5  24  EB  3C  55  89  3A  45  89  FC  7E  C5  AA  --  013EA0
76  42  45  3B  14  7C  07  7F  44  55  3B  AA  56  8B  A8  46  --  013EB0
44  55  89  42  45  89  FC  7E  C5  AA  56  8B  A8  46  8B  0F  --  013EC0
2E  03  E7  C1  3D  8B  50  0E  3E  C5  2E  00  34  44  68  9A  --  013ED0
5E  5F  C9  9B  06  45  FF  4F  14  1E  8E  2E  4F  12  3E  03  --  013EE0
46  FF  03  EB  00  00  E8  46  C7  00  00  2A  C8  57  56  CB  --  013EF0

14  7E  03  05  E7  C1  E8  7E  8B  12  7D  08  E8  7E  83  E8  --  013F00
DE  5E  DD  9B  EE  D9  9B  E5  EB  45  1E  45  C6  16  5E  8E  --  013F10
5E  DC  9B  24  D8  26  9B  05  D9  9B  0A  7E  C5  0E  76  C4  --  013F20
D9  9B  0A  7E  C5  0E  76  C4  0F  76  00  5C  ED  94  9A  DE  --  013F30
05  D9  9B  0A  7E  C5  0E  76  C4  10  EB  24  D8  26  9B  05  --  013F40
ED  94  9A  50  20  1E  DC  2E  9B  E0  D9  9B  24  D8  26  9B  --  013F50
76  C4  D6  5E  DD  9B  EE  D9  9B  00  8E  E9  03  72  00  5C  --  013F60
5E  DC  9B  04  64  D8  26  9B  04  45  D9  9B  0A  7E  C5  0E  --  013F70
D9  9B  0A  7E  C5  0E  76  C4  11  76  00  5C  ED  94  9A  D6  --  013F80
9B  0A  7E  C5  0E  76  C4  12  EB  04  64  D8  26  9B  04  45  --  013F90
20  1E  DC  2E  9B  E0  D9  9B  04  64  D8  26  9B  04  45  D9  --  013FA0
0A  76  FF  0C  76  FF  08  6A  3D  73  00  5C  ED  94  9A  50  --  013FB0
08  6A  0A  C4  83  00  5C  ED  6E  9A  14  76  FF  16  76  FF  --  013FC0
50  00  08  05  14  46  8B  16  76  FF  0E  76  FF  10  76  FF  --  013FD0
B8  4C  1E  45  C6  14  7E  C5  0A  C4  83  00  5C  ED  6E  9A  --  013FE0
0E  76  FF  10  76  FF  50  EA  46  8D  16  01  F3  E9  00  02  --  013FF0
0C  C4  83  00  1C  4B  74  9A  0A  76  FF  0C  76  FF  01  FE  --  014000
9B  EE  D9  9B  00  03  E6  46  C7  01  B6  E9  03  75  C0  0B  --  014010
5E  DC  9B  EA  66  D8  9B  05  D9  9B  0A  7E  C5  DE  5E  DD  --  014020
D8  9B  05  D9  9B  0A  7E  C5  0C  76  00  5C  ED  94  9A  DE  --  014030
D9  9B  EA  66  D8  9B  05  D9  9B  0A  7E  C5  0D  EB  EA  66  --  014040
D9  9B  62  73  00  5C  ED  94  9A  50  20  1E  DC  2E  9B  E0  --  014050
EE  66  D8  9B  04  45  D9  9B  0A  7E  C5  D6  5E  DD  9B  EE  --  014060
D9  9B  0A  7E  C5  0D  76  00  5C  ED  94  9A  D6  5E  DC  9B  --  014070
9B  04  45  D9  9B  0A  7E  C5  0E  EB  EE  66  D8  9B  04  45  --  014080
5C  ED  94  9A  50  20  1E  DC  2E  9B  E0  D9  9B  EE  66  D8  --  014090
0A  76  FF  0C  76  FF  08  6A  00  02  E6  46  C7  1D  73  00  --  0140A0
00  A1  E9  0A  C4  83  00  5C  ED  6E  9A  50  EA  46  8D  16  --  0140B0
```

97

```
66 D8 9B 05 D9 9B 0E 7E C5 DE 5E DD 9B EE D9 9B -- 0140C0
9B 0E 7E C5 0C 76 00 5C ED 94 9A DE 5E DC 9B EA -- 0140D0
D8 9B 05 D9 9B 0E 7E C5 0D EB EA 66 D8 9B 05 D9 -- 0140E0
00 5C ED 94 9A 50 20 1E DC 2E 9B E0 D9 9B EA 66 -- 0140F0
04 45 D9 9B 0E 7E C5 D6 5E DD 9B EE D9 9B 5F 73 -- 014100
C5 0D 76 00 5C ED 94 9A D6 5E DC 9B EE 66 D8 9B -- 014110
9B 0E 7E C5 0E EB EE 66 D8 9B 04 45 D9 9B 0E 7E -- 014120
50 20 1E DC 2E 9B E0 D9 9B EE 66 D8 9B 04 45 D9 -- 014130
16 0E 76 FF 10 76 FF 08 6A 1A 73 00 5C ED 94 9A -- 014140
01 E6 46 C7 0A C4 83 00 5C ED 6E 9A 50 EA 46 8D -- 014150
01 E6 7E 83 06 74 03 E6 7E 83 00 00 E8 46 C7 00 -- 014160
50 EA 46 8D 16 14 76 FF 16 76 FF 12 76 FF 1F 75 -- 014170
46 89 0E C4 83 00 1C 43 81 9A 0A 76 FF 0C 76 FF -- 014180
00 01 B8 2B 75 02 E6 7E 83 06 74 03 E6 7E 83 E8 -- 014190
16 56 8B 14 46 03 05 E0 C1 E8 46 8B 50 12 46 2B -- 0141A0
43 81 9A 50 EA 46 8D 16 0E 76 FF 10 76 FF 50 52 -- 0141B0
12 76 FF 1D EB E8 46 8B E8 46 01 0E C4 83 00 1C -- 0141C0
FF 0C 76 FF 0E 76 FF 10 76 FF 14 76 FF 16 76 FF -- 0141D0
56 CB 5E 5F C9 9B 0E C4 83 00 1C 43 81 9A 0A 76 -- 0141E0
56 89 FC 46 89 0C 56 8B 0A 46 8B 00 00 38 C8 57 -- 0141F0
D9 9B 10 45 D9 9B 0A 7E C5 20 FC 46 83 FE 01 FE -- 014200
D8 5E D9 9B D0 66 D8 9B 05 D9 9B 0A 7E C5 D0 5E -- 014210
9B D4 5E D9 9B D0 66 D8 9B 08 45 D9 9B 0A 7E C5 -- 014220
11 73 00 5C ED 94 9A 50 28 1E DC 2E 9B D8 46 D9 -- 014230
77 00 5C ED 94 9A 50 28 1E DC 2E 9B D4 46 D9 9B -- 014240
00 5C ED 94 9A 50 28 1E DC 2E 9B D4 46 D9 9B 28 -- 014250
9A 50 28 1E DC 2E 9B D8 46 D9 9B 00 DB E9 03 72 -- 014260
76 FF 0C 76 FF 20 6A 00 C7 E9 03 77 00 5C ED 94 -- 014270
9B 0A C4 83 00 5C ED 6E 9A FC 76 FF FE 76 FF 0A -- 014280
08 5D D9 9B 0A 7E C5 15 D9 9B FC 7E C5 D0 46 D9 -- 014290

73 00 5C ED 94 9A 50 28 1E DC 2E 9B D4 46 D9 9B -- 0142A0
00 5C ED 94 9A 50 28 1E DC 2E 9B D8 46 D9 9B 1A -- 0142B0
D9 9B 0A 7E C5 0A EB 18 45 D9 9B 0A 7E C5 09 76 -- 0142C0
14 45 D9 9B 0A 7E C5 C8 5E DD 9B E0 D9 9B 18 45 -- 0142D0
D9 9B 0A 7E C5 04 55 D9 9B FC 7E C5 C8 46 DC 9B -- 0142E0
0C 76 FF 20 6A 40 74 00 1C 7D 83 0A 7E C5 0C 5D -- 0142F0
0A C4 83 00 5C ED 6E 9A 50 DC 46 8D 16 0A 76 FF -- 014300
6E 9A 0A 76 FF 0C 76 FF FC 76 FF FE 76 FF 20 6A -- 014310
FE 76 FF 50 DC 46 8D 16 20 6A 0A C4 83 00 5C ED -- 014320
0A EB 00 02 B8 0A C4 83 00 5C ED 6E 9A FC 76 FF -- 014330
56 CB 5E 5F C9 9B 00 01 B8 45 1E 45 C6 FC 7E C5 -- 014340
26 9B 04 45 D9 9B 0A 7E C5 0A 76 C4 EC 8B 55 57 -- 014350
1E 45 C6 0A 7E C5 07 75 00 5C ED 94 9A 0C 5C D8 -- 014360
7E C5 0A 76 C4 EC 8B 55 57 56 CB 5E 5F C9 9B 4C -- 014370
75 00 5C ED 94 9A 0C 5C D8 26 9B 04 45 D9 9B 0A -- 014380
9A 08 5C D8 26 9B 05 D9 9B 0A 7E C5 0A 76 C4 20 -- 014390
1E 45 C6 0A 7E C5 0A EB C0 2B 04 75 00 5C ED 94 -- 0143A0
C7 00 00 06 C8 57 56 CB 5E 5F C9 9B 00 01 B8 4C -- 0143B0
8B 12 7D 06 FC 7E 83 FC 46 FF 03 EB 00 01 FC 46 -- 0143C0
EB 45 1E 45 C6 14 5E 8E 12 7E 03 05 E7 C1 FC 7E -- 0143D0
0C 76 FF 0E 76 FF 10 76 FF 12 76 FF 14 76 FF E5 -- 0143E0
C5 75 74 C0 0B 0C C4 83 00 1C 37 E7 9A 0A 76 FF -- 0143F0
0E 7E C5 1D D9 9B 12 7E C5 05 D9 9B 0A 7E 01 FE -- 014400
45 D9 9B 0A 7E C5 04 5D D9 9B 12 7E C5 05 D9 9B -- 014410
C5 08 5D D9 9B 12 7E C5 20 55 D9 9B 12 7E C5 04 -- 014420
12 7E C5 24 55 D9 9B 12 7E C5 04 45 D9 9B 0E 7E -- 014430
D9 9B 12 7E C5 08 45 D9 9B 0A 7E C5 0C 5D D9 9B -- 014440
2C 5D D9 9B 12 7E C5 08 45 D9 9B 0E 7E C5 28 5D -- 014450
1E 45 88 12 7E C5 98 3E 45 88 12 7E C5 00 4C B8 -- 014460
```

98

```
1C 3B 2B 9A 12 76 FF 14 76 FF 00 B2 E9 00 02 B8 -- 014470
46 FF 03 EB 00 00 FC 46 C7 FE 46 89 04 C4 83 00 -- 014480
03 06 E0 C1 FC 46 8B 18 7D FE 46 3B FC 46 8B FC -- 014490
EB 04 C4 83 00 1C 34 AD 9A 50 52 14 56 8B 12 46 -- 0144A0
FC 46 FF 03 EB 00 00 FC 46 C7 00 00 FA 46 C7 DD -- 0144B0
8E 12 7E 03 05 E7 C1 FC 7E 8B 5F 7D 06 FC 7E 83 -- 0144C0
46 03 05 E0 C1 FC 46 8B E5 75 41 1E 7D 80 14 5E -- 0144D0
C0 0B 04 C4 83 00 1C 36 32 9A 50 52 14 56 8B 12 -- 0144E0
C1 FC 46 8B 20 6A 26 74 FA 46 3B FC 46 8B CB 74 -- 0144F0
05 E0 C1 FA 46 8B 50 52 14 56 8B 12 46 03 05 E0 -- 014500
0A C4 83 00 5C ED 6E 9A 50 52 14 56 8B 12 46 03 -- 014510
C8 57 56 CB 5E 5F C9 9B FA 46 8B 98 EB FA 46 FF -- 014520
DD 9B EE D9 9B D6 46 89 D4 46 89 C0 2B 00 00 34 -- 014530
24 D8 26 9B 04 45 D9 9B 0A 7E C5 0A 76 C4 CC 5E -- 014540
7E C5 0A 76 C4 10 76 00 5C ED 94 9A CC 5E DC 9B -- 014550
7E C5 0A 76 C4 11 EB 24 D8 26 9B 04 45 D9 9B 0A -- 014560
1E DC 2E 9B E0 D9 9B 24 D8 26 9B 04 45 D9 9B 0A -- 014570
FC 5E D9 9B EE D9 9B 09 73 00 5C ED 94 9A 50 12 -- 014580
24 D8 26 9B 04 45 D9 9B 0A 7E C5 0A 76 C4 6D EB -- 014590
26 9B 04 45 D9 9B 0E 7E C5 0E 76 C4 CC 5E DD 9B -- 0145A0
5E DD 9B EE D9 9B FC 5E D9 9B CC 76 DC 9B 24 D8 -- 0145B0
06 76 00 5C ED 94 9A CC 5E DC 9B FC 46 D9 9B CC -- 0145C0
DC 2E 9B E0 D9 9B FC 46 D9 9B 07 EB FC 46 D9 9B -- 0145D0
EB 00 01 D6 46 C7 07 73 00 5C ED 94 9A 50 12 1E -- 0145E0
9B FC 5E D9 9B FC 76 D8 9B 50 30 06 DD 2E 9B 0E -- 0145F0
D9 9B 0A 7E C5 0A 76 C4 CC 5E DD 9B EE D9 01 FE -- 014600
00 5C ED 94 9A CC 5E DC 9B 04 64 D8 26 9B 08 45 -- 014610
64 D8 26 9B 08 45 D9 9B 0A 7E C5 0A 76 C4 11 76 -- 014620
D8 26 9B 08 45 D9 9B 0A 7E C5 0A 76 C4 12 EB 04 -- 014630

00 5C ED 94 9A 50 12 1E DC 2E 9B E0 D9 9B 04 64 -- 014640
7E C5 0A 76 C4 6F EB F8 5E D9 9B EE D9 9B 09 73 -- 014650
76 C4 CC 5E DD 9B 04 64 D8 26 9B 08 45 D9 9B 0A -- 014660
76 DC 9B 04 64 D8 26 9B 08 45 D9 9B 0E 7E C5 0E -- 014670
F8 46 D9 9B CC 5E DD 9B EE D9 9B F8 5E D9 9B CC -- 014680
EB F8 46 D9 9B 06 76 00 5C ED 94 9A CC 5E DC 9B -- 014690
94 9A 50 12 1E DC 2E 9B E0 D9 9B F8 46 D9 9B 07 -- 0146A0
06 DD 2E 9B 0E EB 00 01 D4 46 C7 07 73 00 5C ED -- 0146B0
12 46 8B 14 76 FF F8 5E D9 9B F8 76 D8 9B 50 30 -- 0146C0
76 FF 50 00 10 05 12 46 8B 14 76 FF 50 00 14 05 -- 0146D0
0E 7E C5 0E 76 C4 00 5C ED 99 9A F8 46 D9 9B D4 -- 0146E0
9A 4F 6A 36 DC 2E 9B 08 44 D8 26 9B 04 45 D9 9B -- 0146F0
26 9B 04 45 D9 9B 0A 7E C5 0A 76 C4 00 5C ED 99 -- 014700
76 FF 00 5C ED 99 9A 4F 6A 36 DC 2E 9B 08 44 D8 -- 014710
0E 7E C5 0E 76 C4 00 5C ED 99 9A FC 46 D9 9B D6 -- 014720
99 9A 4F 6A 36 DC 2E 9B 04 44 D8 26 9B 05 D9 9B -- 014730
44 D8 26 9B 05 D9 9B 0A 7E C5 0A 76 C4 00 5C ED -- 014740
4C B1 28 9A 00 5C ED 99 9A 4F 6A 36 DC 2E 9B 04 -- 014750
7E C5 01 00 E9 00 01 B8 06 74 C0 0B 3C C4 83 00 -- 014760
04 45 D9 9B 0E 7E C5 E4 5E D9 9B 04 45 D9 9B 0A -- 014770
7E C5 E0 56 D9 9B 05 D9 9B 0A 7E C5 F0 5E D9 9B -- 014780
7E C5 EC 56 D9 9B 05 D9 9B 0E 7E C5 1D D9 9B 12 -- 014790
E8 56 D9 9B 08 45 D9 9B 0A 7E C5 04 5D D9 9B 12 -- 0147A0
D9 9B 08 45 D9 9B 0E 7E C5 08 5D D9 9B 12 7E C5 -- 0147B0
41 1E 45 C6 12 7E C5 0C 5D D9 9B 12 7E C5 F4 56 -- 0147C0
12 7E C5 04 C4 83 00 64 34 23 9A 50 E0 46 8D 16 -- 0147D0
7E C5 08 45 D9 9B 0A 7E C5 35 74 C0 0B 1C 45 89 -- 0147E0
D9 9B 12 7E C5 08 45 D9 9B 0E 7E C5 1D D9 9B 12 -- 0147F0
5D D9 9B 12 7E C5 05 D9 9B 0A 7E C5 04 5D 01 FE -- 014800
76 C4 0C 5D D9 9B 12 7E C5 05 D9 9B 0E 7E C5 08 -- 014810
```

```
DC 5E D9 9B 24 D8 26 9B 10 45 D9 9B 12 7E C5 0A -- 014820
D9 9B 24 D8 26 9B 14 45 D9 9B 12 7E C5 0E 76 C4 -- 014830
D9 9B CC 5E DD 9B D8 4E D8 9B D8 46 D9 9B D8 5E -- 014840
9A 00 5C ED 99 9A CC 46 DC 9B DC 4E D8 9B DC 46 -- 014850
C0 2B 18 5D D9 9B 12 7E C5 08 C4 83 00 64 4E FE -- 014860
D9 9B 0A 7E C5 00 00 38 C8 57 56 CB 5E 5F C9 9B -- 014870
ED 99 9A 14 45 D9 9B 0A 7E C5 DC 5E D9 9B 18 45 -- 014880
7E C5 00 5C ED 99 9A 10 45 D9 9B 0A 7E C5 00 5C -- 014890
05 D9 9B 0A 7E C5 00 5C ED 99 9A 04 45 D9 9B 0A -- 0148A0
DA 46 89 20 C4 83 00 1C 3D E1 9A 00 5C ED 99 9A -- 0148B0
9B 0A 7E C5 00 5C ED 99 9A 14 45 D9 9B 0A 7E C5 -- 0148C0
9A 0C 45 D9 9B 0A 7E C5 00 5C ED 99 9A 10 45 D9 -- 0148D0
00 5C ED 99 9A 08 45 D9 9B 0A 7E C5 00 5C ED 99 -- 0148E0
46 3B DA 46 8B D8 46 89 20 C4 83 00 1C 3D E1 9A -- 0148F0
5C D8 26 9B 05 D9 9B 0A 7E C5 0A 76 C4 51 75 D8 -- 014900
89 C0 2B 02 EB 00 01 B8 05 72 00 5C ED 94 9A 08 -- 014910
7E 83 13 75 02 DA 7E 83 06 74 01 DA 7E 83 D0 46 -- 014920
EB D6 46 89 00 03 B8 03 EB 00 01 B8 05 74 00 D0 -- 014930
89 00 01 B8 03 EB 00 03 B8 05 74 00 D0 7E 83 2D -- 014940
2E 4E B6 3E 03 2E 02 E7 C1 DA 7E 8B 1A EB D6 46 -- 014950
7E 83 D6 46 89 E4 2A 05 8A D8 7E 03 4E B8 1E 8E -- 014960
EB 00 00 D2 46 C7 01 AC E9 00 01 B8 06 75 01 D6 -- 014970
76 FF 20 6A 20 7D D6 46 3B D2 46 8B D2 46 FF 03 -- 014980
0C 56 8B 0A 46 03 06 E0 C1 D2 46 8B 0A 76 FF 0C -- 014990
E9 D6 46 8B D5 EB 0A C4 83 00 5C ED 6E 9A 50 52 -- 0149A0
FF B8 05 75 01 DA 7E 83 06 74 00 DA 7E 83 00 F7 -- 0149B0
10 45 D9 9B 0A 7E C5 D4 46 89 00 01 B8 03 EB FF -- 0149C0
D9 9B 08 5D D9 9B 0A 7E C5 40 55 D9 9B 0A 7E C5 -- 0149D0

45 D9 9B 0A 7E C5 C8 5E DD 9B D4 4E DE 9B DC 46 -- 0149E0
9B 0A 7E C5 44 55 D9 9B 0A 7E C5 C8 46 DC 9B 14 -- 0149F0
C5 10 45 D9 9B 0A 7E C5 00 B3 E9 0C 5D D9 01 FE -- 014A00
7E C5 48 55 D9 9B 0A 7E C5 00 80 95 D9 9B 0A 7E -- 014A10
3B DA 46 8B 08 5D D9 9B 0A 7E C5 40 55 D9 9B 0A -- 014A20
05 75 01 DA 7E 83 06 74 00 DA 7E 83 19 75 D8 46 -- 014A30
DA 7E 83 11 EB D4 46 89 00 01 B8 03 EB FF FF B8 -- 014A40
D9 9B D4 46 89 00 01 B8 03 EB FF FF B8 05 75 00 -- 014A50
45 D9 9B 0A 7E C5 C8 5E DD 9B D4 4E DE 9B DC 46 -- 014A60
9B 0A 7E C5 44 55 D9 9B 0A 7E C5 C8 46 DC 9B 14 -- 014A70
C5 C8 5E DD 9B D4 4E DE 9B DC 46 D9 9B 0C 5D D9 -- 014A80
95 D9 9B 0A 7E C5 C8 66 DC 9B 14 45 D9 9B 0A 7E -- 014A90
03 75 00 02 3D 10 EB 4C 5D D9 9B 0A 7E C5 00 84 -- 014AA0
7D 83 0A 7E C5 FF 4D E9 03 75 00 03 3D FF 01 E9 -- 014AB0
B8 03 EB 00 02 B8 05 75 02 D6 7E 83 61 74 00 1C -- 014AC0
0A 46 03 05 E0 C1 D2 46 8B 20 6A D2 46 89 00 04 -- 014AD0
83 00 5C ED 6E 9A 50 E0 46 8D 16 50 52 0C 56 8B -- 014AE0
05 E0 C1 D2 46 8B 0A 76 FF 0C 76 FF 20 6A 0A C4 -- 014AF0
0A C4 83 00 5C ED 6E 9A 50 52 0C 56 8B 0A 46 03 -- 014B00
ED 6E 9A 0A 76 FF 0C 76 FF 50 E0 46 8D 16 20 6A -- 014B10
C8 57 56 CB 5E 5F C9 9B D6 46 8B 0A C4 83 00 5C -- 014B20
00 5C ED 94 9A 1A 5E DC 9B 0A 46 DD 9B 00 00 02 -- 014B30
00 FE 7E 83 FE 46 89 00 03 B8 03 EB C0 2B 04 77 -- 014B40
77 00 5C ED 94 9A 22 5E DC 9B 12 46 DD 9B 1C 74 -- 014B50
DD 9B 19 EB FE 46 89 00 02 B8 03 EB 00 03 B8 05 -- 014B60
EB C0 2B 04 77 00 5C ED 94 9A 22 5E DC 9B 12 46 -- 014B70
30 C8 57 56 CB 5E 5F C9 9B FE 46 89 00 01 B8 03 -- 014B80
0A 7E C5 EC 5E D9 9B 04 45 D9 9B 0A 7E C5 00 00 -- 014B90
9B 14 45 D9 9B 0A 7E C5 E8 5E D9 9B 0C 45 D9 9B -- 014BA0
00 5C ED 94 9A EC 5E D8 9B F4 46 D9 9B F4 5E D9 -- 014BB0
76 00 5C ED 94 9A E8 5E D8 9B F4 46 D9 9B 0F 77 -- 014BC0
```

100

```
14 72 00 5C ED 94 9A EC 5E D8 9B F4 46 D9 9B 1E -- 014BD0
2B 05 72 00 5C ED 94 9A E8 5E D8 9B F4 46 D9 9B -- 014BE0
7E C5 F0 5E D9 9B 05 D9 9B 0A 7E C5 00 8F E9 C0 -- 014BF0
9B F4 46 D9 9B F8 5E D9 9B 10 45 D9 9B 0A 01 FE -- 014C00
9B EC 66 D8 9B F4 46 D9 9B D0 5E DD 9B EC 66 D8 -- 014C10
9B F0 66 D8 9B F8 46 D9 9B D8 5E DD 9B D0 4E DC -- 014C20
9B E0 4E DC 9B F0 66 D8 9B F8 46 D9 9B E0 5E DD -- 014C30
08 C4 83 00 64 4E FE 9A 00 5C ED 99 9A D8 46 DC -- 014C40
5C ED 94 9A E8 5E D8 9B EC 46 D9 9B FC 5E D9 9B -- 014C50
E0 D9 9B FC 46 D9 9B 07 EB FC 46 D9 9B 06 73 00 -- 014C60
9B 0E 7E C5 E0 46 DC 9B F8 46 D9 9B E0 5E DD 9B -- 014C70
2E EC 8B 55 57 56 CB 5E 5F C9 9B 00 01 B8 1D D9 -- 014C80
3D 83 4F 4A 3E C5 2E 28 75 00 3D 83 4F 46 3E C5 -- 014C90
FF 4F 36 36 FF 2E 4F 38 36 FF 2E 57 56 1E 75 00 -- 014CA0
9A E9 5E 5F 00 5C FE EC 9A 10 6A 0A 76 FF 0C 76 -- 014CB0
1C D8 26 9B 05 D9 9B 4F 36 3E C5 2E 0A 76 C4 00 -- 014CC0
3E C5 2E 05 D9 9B 0A 7E C5 10 76 00 5C ED 94 9A -- 014CD0
9B 4F 3E 3E C5 2E 0A 76 C4 26 EB 1D D9 9B 4F 36 -- 014CE0
7E C5 0F 73 00 5C ED 94 9A 04 5C D8 26 9B 05 D9 -- 014CF0
0A 76 C4 1D D9 9B 4F 3E 3E C5 2E 04 45 D9 9B 0A -- 014D00
ED 94 9A 08 5C D8 26 9B 05 D9 9B 4F 3A 3E C5 2E -- 014D10
4F 3A 3E C5 2E 08 45 D9 9B 0A 7E C5 11 76 00 5C -- 014D20
05 D9 9B 4F 42 3E C5 2E 0A 76 C4 26 EB 1D D9 9B -- 014D30
9B 0A 7E C5 0F 73 00 5C ED 94 9A 0C 5C D8 26 9B -- 014D40
CB 5E 5F C9 9B 1D D9 9B 4F 42 3E C5 2E 0C 45 D9 -- 014D50
9B 05 D9 9B 0A 7E C5 0A 76 C4 00 00 4C C8 57 56 -- 014D60
D9 9B 0A 7E C5 0A 76 C4 FC 5E D9 9B 04 64 D8 26 -- 014D70

7E C5 0A 76 C4 F8 5E D9 9B 10 64 D8 26 9B 0C 45 -- 014D80
76 C4 F4 5E D9 9B 04 64 D8 26 9B 08 45 D9 9B 0A -- 014D90
5E D9 9B 10 64 D8 26 9B 14 45 D9 9B 0A 7E C5 0A -- 014DA0
5C ED 99 9A F8 46 D9 9B C4 5E DD 9B EE D9 9B F0 -- 014DB0
83 00 64 53 78 9A 00 5C ED 99 9A FC 46 D9 9B 00 -- 014DC0
46 D9 9B 1C 76 00 5C ED 94 9A C4 5E DC 9B 10 C4 -- 014DD0
9A 00 5C ED 99 9A FC 46 D9 9B 00 5C ED 99 9A F8 -- 014DE0
ED 99 9A F8 46 D9 9B 1D EB 10 C4 83 00 64 53 78 -- 014DF0
53 78 9A 00 5C ED 99 9A FC 46 D9 9B 00 5C 01 FE -- 014E00
9B EE D9 9B EC 5E D9 9B E0 D9 9B 10 C4 83 00 64 -- 014E10
F4 46 D9 9B 00 5C ED 99 9A F0 46 D9 9B C4 5E DD -- 014E20
5E DC 9B 10 C4 83 00 64 53 78 9A 00 5C ED 99 9A -- 014E30
5C ED 99 9A F0 46 D9 9B 1C 76 00 5C ED 94 9A C4 -- 014E40
83 00 64 53 78 9A 00 5C ED 99 9A F4 46 D9 9B 00 -- 014E50
46 D9 9B 00 5C ED 99 9A F0 46 D9 9B 1D EB 10 C4 -- 014E60
D9 9B 10 C4 83 00 64 53 78 9A 00 5C ED 99 9A F4 -- 014E70
56 D9 9B E8 76 D8 9B F4 46 D9 9B E8 5E D9 9B E0 -- 014E80
46 DC 9B EC 76 D8 9B FC 46 D9 9B C4 5E DD 9B D0 -- 014E90
9B F0 46 D9 9B E4 5E D9 9B 4F 6A 36 DC 2E 9B C4 -- 014EA0
9B EC 76 D8 9B F8 46 D9 9B C4 5E DD 9B E8 76 D8 -- 014EB0
EE D9 9B E0 5E D9 9B 4F 6A 36 DC 2E 9B C4 46 DC -- 014EC0
46 D9 9B 00 5C ED 99 9A E0 46 D9 9B C4 5E DD 9B -- 014ED0
DC 9B 10 C4 83 00 64 53 78 9A 00 5C ED 99 9A E4 -- 014EE0
ED 99 9A E0 46 D9 9B 1C 76 00 5C ED 94 9A C4 5E -- 014EF0
00 64 53 78 9A 00 5C ED 99 9A E4 46 D9 9B 00 5C -- 014F00
D9 9B 00 5C ED 99 9A E0 46 D9 9B 1D EB 10 C4 83 -- 014F10
9B 10 C4 83 00 64 53 78 9A 00 5C ED 99 9A E4 46 -- 014F20
9A 00 5C ED 99 9A D0 46 D9 9B DC 5E D9 9B E0 D9 -- 014F30
9B F0 46 D9 9B D4 5E D9 9B 08 C4 83 00 64 52 FE -- 014F40
D4 46 D9 9B 06 76 00 5C ED 94 9A 50 28 1E DC 2E -- 014F50
9B 1D D9 9B 1A 7E C5 E0 D9 9B D4 46 D9 9B 07 EB -- 014F60
9B F8 46 D9 9B B4 5E DD 9B E8 4E D8 9B EC 46 D9 -- 014F70
```

```
9B  F4  4E  D8  9B  FC  46  D9  9B  BC  5E  DD  9B  F0  4E  D8  --  014F80
64  52  FE  9A  00  5C  ED  99  9A  B4  76  DC  9B  BC  46  DC  --  014F90
2E  9B  C4  5E  DD  9B  4F  6A  36  DC  2E  9B  08  C4  83  00  --  014FA0
F0  46  D9  9B  D8  5E  D9  9B  C4  66  DC  9B  50  38  06  DD  --  014FB0
E0  4E  D8  9B  F4  46  D9  9B  C4  5E  DD  9B  E4  4E  D8  9B  --  014FC0
76  00  5C  ED  94  9A  50  28  1E  DC  2E  9B  C4  66  DC  9B  --  014FD0
7E  C5  D8  46  D9  9B  04  EB  E0  D9  9B  D8  46  D9  9B  09  --  014FE0
C4  5E  DD  9B  E4  4E  D8  9B  F8  46  D9  9B  1D  D9  9B  12  --  014FF0
2E  9B  C4  66  DC  9B  E0  4E  D8  9B  FC  46  D9  9B  01  FE  --  015000
9B  D8  46  D9  9B  09  76  00  5C  ED  94  9A  50  28  1E  DC  --  015010
D9  9B  1D  D9  9B  0E  7E  C5  D8  46  D9  9B  04  EB  E0  D9  --  015020
C5  2F  73  00  5C  ED  94  9A  50  40  1E  DC  2E  9B  DC  46  --  015030
50  28  1E  DC  2E  9B  FC  46  D9  9B  00  01  05  C7  1E  7E  --  015040
C5  FC  76  D8  9B  F8  46  D9  9B  12  74  00  5C  ED  94  9A  --  015050
7E  C5  60  EB  00  01  B8  65  EB  C0  2B  1D  D9  9B  16  7E  --  015060
5E  DD  9B  EC  4E  D8  9B  F0  46  D9  9B  00  00  05  C7  1E  --  015070
5E  D9  9B  C4  46  DC  9B  E8  4E  D8  9B  F8  46  D9  9B  C4  --  015080
00  5C  ED  94  9A  50  28  1E  DC  2E  9B  CC  46  D9  9B  CC  --  015090
D9  9B  C4  5E  DD  9B  EC  4E  D8  9B  F4  46  D9  9B  29  74  --  0150A0
76  D8  9B  E0  D9  9B  C4  46  DC  9B  E8  4E  D8  9B  FC  46  --  0150B0
C9  9B  00  01  B8  03  EB  C0  2B  1D  D9  9B  16  7E  C5  CC  --  0150C0
0E  45  D9  9B  0E  7E  C5  00  00  62  C8  57  56  CB  5E  5F  --  0150D0
9B  D6  5E  D9  9B  0E  45  D9  9B  0A  7E  C5  DA  5E  D9  9B  --  0150E0
94  9A  9E  5E  DC  9B  DA  46  D9  9B  9E  5E  DD  9B  EE  D9  --  0150F0
9B  DA  46  D9  9B  07  EB  DA  46  D9  9B  06  76  00  5C  ED  --  015100
46  D9  9B  AE  5E  DD  9B  EE  D9  9B  A6  5E  DD  9B  E0  D9  --  015110

D6  46  D9  9B  06  76  00  5C  ED  94  9A  AE  5E  DC  9B  D6  --  015120
5E  DD  9B  A6  46  DC  9B  E0  D9  9B  D6  46  D9  9B  07  EB  --  015130
B6  5E  DC  9B  DA  46  D9  9B  B6  5E  DD  9B  EE  D9  9B  BE  --  015140
46  D9  9B  07  EB  DA  46  D9  9B  06  76  00  5C  ED  94  9A  --  015150
D6  66  D8  9B  DA  46  D9  9B  C6  5E  DD  9B  E0  D9  9B  DA  --  015160
D9  9B  BE  76  DC  9B  C6  4E  DC  9B  50  48  0E  DC  2E  9B  --  015170
4F  6A  36  DC  2E  9B  DA  66  D8  9B  D6  46  D9  9B  F2  5E  --  015180
46  8D  16  50  E6  46  8D  16  EE  5E  D9  9B  F2  46  D8  9B  --  015190
5C  ED  99  9A  E0  D9  9B  12  45  D9  9B  0A  7E  C5  50  EA  --  0151A0
0A  7E  C5  00  5C  ED  99  9A  04  45  D9  9B  0A  7E  C5  00  --  0151B0
9A  04  45  D9  9B  0E  7E  C5  00  5C  ED  99  9A  05  D9  9B  --  0151C0
9A  00  5C  ED  99  9A  05  D9  9B  0E  7E  C5  00  5C  ED  99  --  0151D0
46  D8  9B  50  50  06  DD  2E  9B  30  C4  83  00  4C  B0  08  --  0151E0
EE  46  D9  9B  C6  5E  DD  9B  EE  D9  9B  F2  5E  D9  9B  F2  --  0151F0
5C  ED  94  9A  C6  5E  DC  9B  50  38  26  DC  2E  9B  01  FE  --  015200
9B  0D  EB  50  38  26  DC  2E  9B  EE  46  D9  9B  0C  76  00  --  015210
1E  DC  2E  9B  E0  D9  9B  50  38  26  DC  2E  9B  EE  46  D9  --  015220
9B  19  EB  01  F7  46  C6  06  73  00  5C  ED  94  9A  50  12  --  015230
08  C4  83  00  64  30  0A  9A  00  5C  ED  99  9A  EE  46  D9  --  015240
9B  C6  5E  DD  9B  EE  D9  9B  00  F7  46  C6  E2  5E  D9  9B  --  015250
ED  94  9A  C6  5E  DC  9B  50  38  26  DC  2E  9B  F2  46  D9  --  015260
0D  EB  50  38  26  DC  2E  9B  F2  46  D9  9B  0C  76  00  5C  --  015270
DC  2E  9B  E0  D9  9B  50  38  26  DC  2E  9B  F2  46  D9  9B  --  015280
19  EB  01  F6  46  C6  06  73  00  5C  ED  94  9A  50  12  1E  --  015290
C4  83  00  64  30  0A  9A  00  5C  ED  99  9A  F2  46  D9  9B  --  0152A0
C5  29  74  00  F7  7E  80  00  F6  46  C6  DE  5E  D9  9B  08  --  0152B0
66  D8  9B  D2  46  D9  9B  D2  5E  D9  9B  05  D9  9B  0A  7E  --  0152C0
46  D8  9B  C6  4E  DC  9B  DE  46  D9  9B  C6  5E  DD  9B  EA  --  0152D0
D9  9B  2B  74  00  F6  7E  80  00  86  E9  CE  5E  D9  9B  E6  --  0152E0
25  D8  9B  D2  46  D9  9B  0A  7E  C5  D2  5E  D9  9B  EA  46  --  0152F0
9B  C6  4E  DC  9B  E2  46  D9  9B  0A  7E  C5  C6  5E  DD  9B  --  015300
66  D8  9B  DE  46  D9  9B  55  EB  CE  5E  D9  9B  04  45  D8  --  015310
9B  0D  D8  9B  E2  46  D9  9B  0A  7E  C5  BE  5E  DD  9B  E2  --  015320
```

```
DC  9B  EA  4E  D8  9B  DE  46  D9  9B  0A  7E  C5  C6  5E  DD  --  015330
D9  9B  BE  76  DC  9B  E6  66  D8  9B  04  45  D8  9B  C6  66  --  015340
D9  9B  C6  5E  DD  9B  EA  66  D8  9B  D2  46  D9  9B  D2  5E  --  015350
8D  16  CE  5E  D9  9B  E6  46  D8  9B  C6  4E  DC  9B  DE  46  --  015360
9A  12  45  D9  9B  0A  7E  C5  50  D2  46  8D  16  50  CE  46  --  015370
00  5C  ED  99  9A  04  45  D9  9B  0A  7E  C5  00  5C  ED  99  --  015380
9A  CE  46  D9  9B  00  5C  ED  99  9A  05  D9  9B  0A  7E  C5  --  015390
B0  08  9A  00  5C  ED  99  9A  D2  46  D9  9B  00  5C  ED  99  --  0153A0
46  D9  9B  F8  5E  D9  9B  D2  46  D9  9B  30  C4  83  00  4C  --  0153B0
9B  0A  7E  C5  C6  5E  DD  9B  EE  D9  9B  FC  5E  D9  9B  CE  --  0153C0
76  00  5C  ED  94  9A  C6  5E  DC  9B  D2  66  D8  9B  05  D9  --  0153D0
0A  7E  C5  0D  EB  D2  66  D8  9B  05  D9  9B  0A  7E  C5  0C  --  0153E0
50  20  1E  DC  2E  9B  E0  D9  9B  D2  66  D8  9B  05  D9  9B  --  0153F0
BE  5E  DD  9B  EE  D9  9B  48  73  00  5C  ED  94  9A  01  FE  --  015400
9A  BE  5E  DC  9B  CE  66  D8  9B  04  45  D9  9B  0A  7E  C5  --  015410
66  D8  9B  04  45  D9  9B  0A  7E  C5  0D  76  00  5C  ED  94  --  015420
D9  9B  CE  66  D8  9B  04  45  D9  9B  0A  7E  C5  0E  EB  CE  --  015430
8A  E9  03  73  00  5C  ED  94  9A  50  20  1E  DC  2E  9B  E0  --  015440
D8  9B  05  D9  9B  0E  7E  C5  B6  5E  DD  9B  EE  D9  9B  00  --  015450
0E  7E  C5  0C  76  00  5C  ED  94  9A  B6  5E  DC  9B  D2  66  --  015460
9B  05  D9  9B  0E  7E  C5  0D  EB  D2  66  D8  9B  05  D9  9B  --  015470
5C  ED  94  9A  50  20  1E  DC  2E  9B  E0  D9  9B  D2  66  D8  --  015480
0E  7E  C5  AE  5E  DD  9B  EE  D9  9B  00  82  E9  03  72  00  --  015490
5C  ED  94  9A  AE  5E  DC  9B  CE  66  D8  9B  04  45  D9  9B  --  0154A0
0E  EB  CE  66  D8  9B  04  45  D9  9B  0E  7E  C5  0D  76  00  --  0154B0

2E  9B  E0  D9  9B  CE  66  D8  9B  04  45  D9  9B  0E  7E  C5  --  0154C0
0C  76  FF  08  6A  3D  73  00  5C  ED  94  9A  50  20  1E  DC  --  0154D0
C4  83  00  5C  ED  6E  9A  12  76  FF  14  76  FF  0A  76  FF  --  0154E0
05  12  46  8B  14  76  FF  0E  76  FF  10  76  FF  08  6A  0A  --  0154F0
45  C6  12  7E  C5  0A  C4  83  00  5C  ED  6E  9A  50  00  08  --  015500
14  76  FF  16  76  FF  01  6A  00  BB  E9  00  02  B8  4C  1E  --  015510
82  9A  0A  76  FF  0C  76  FF  50  F8  46  8D  16  12  76  FF  --  015520
FF  0C  76  FF  08  6A  36  75  C0  0B  10  C4  83  00  1C  48  --  015530
0A  C4  83  00  5C  ED  6E  9A  12  76  FF  14  76  FF  0A  76  --  015540
00  08  05  12  46  8B  14  76  FF  50  F8  46  8D  16  08  6A  --  015550
4C  1E  45  C6  12  7E  C5  0A  C4  83  00  5C  ED  6E  9A  50  --  015560
14  76  FF  50  16  46  2B  00  01  B8  02  6A  40  12  46  83  --  015570
82  9A  0E  76  FF  10  76  FF  50  F8  46  8D  16  12  76  FF  --  015580
F8  46  8D  16  08  6A  36  75  C0  0B  10  C4  83  00  1C  48  --  015590
6A  0A  C4  83  00  5C  ED  6E  9A  12  76  FF  14  76  FF  50  --  0155A0
00  08  05  12  46  8B  14  76  FF  0E  76  FF  10  76  FF  08  --  0155B0
4C  1E  45  C6  12  7E  C5  0A  C4  83  00  5C  ED  6E  9A  50  --  0155C0
7E  C5  00  00  2C  C8  57  56  CB  5E  5F  C9  9B  00  04  B8  --  0155D0
9B  04  45  D9  9B  0A  7E  C5  F4  5E  D9  9B  05  D9  9B  0A  --  0155E0
5E  D9  9B  F4  66  D8  9B  05  D9  9B  0E  7E  C5  F0  5E  D9  --  0155F0
D9  9B  F0  66  D8  9B  04  45  D9  9B  0E  7E  C5  FC  01  FE  --  015600
7E  C5  EE  D9  9B  73  74  00  08  7D  83  0A  7E  C5  F8  5E  --  015610
FC  46  D9  9B  DC  5E  DD  9B  EE  D9  9B  14  5D  D9  9B  12  --  015620
EB  FC  46  D9  9B  06  76  00  5C  ED  94  9A  DC  5E  DC  9B  --  015630
94  9A  50  12  1E  DC  2E  9B  E0  D9  9B  FC  46  D9  9B  07  --  015640
2E  9B  FC  46  D9  9B  02  6D  E9  C0  2B  05  73  00  5C  ED  --  015650
F8  4E  D8  9B  F8  46  D9  9B  D4  5E  DD  9B  4F  6A  0E  DC  --  015660
DC  46  DC  9B  FC  4E  D8  9B  FC  46  D9  9B  DC  5E  DD  9B  --  015670
7E  C5  00  9A  E9  10  5D  D9  9B  12  7E  C5  D4  76  DC  9B  --  015680
46  D9  9B  DC  5E  DD  9B  FC  4E  D8  9B  0A  45  D9  9B  0A  --  015690
DC  5E  DD  9B  EE  D9  9B  EC  5E  D9  9B  DC  66  DC  9B  F8  --  0156A0
9B  06  76  00  5C  ED  94  9A  DC  5E  DC  9B  EC  46  D9  9B  --  0156B0
1E  DC  2E  9B  E0  D9  9B  EC  46  D9  9B  07  EB  EC  46  D9  --  0156C0
D9  9B  01  E9  E9  C0  2B  05  73  00  5C  ED  94  9A  50  12  --  0156D0
```

```
F8 46 D9 9B D4 5E DD 9B 4F 6A 0E DC 2E 9B EC 46 -- 0156E0
FC 4E D8 9B FC 46 D9 9B DC 5E DD 9B F8 4E D8 9B -- 0156F0
C4 14 5D D9 9B 12 7E C5 D4 76 DC 9B DC 46 DC 9B -- 015700
D9 9B 0A 4C D8 26 9B 14 45 D9 9B 12 7E C5 0A 76 -- 015710
9B 12 7E C5 F4 46 D9 9B 10 5D D9 9B 12 7E C5 E0 -- 015720
D8 9B 12 7E C5 F0 46 D9 9B 10 5D D9 9B 10 45 D8 -- 015730
14 45 D9 9B 12 7E C5 0E 76 C4 14 5D D9 9B 14 45 -- 015740
12 7E C5 0E 76 C4 00 5C ED 99 9A 04 64 D8 26 9B -- 015750
53 78 9A 00 5C ED 99 9A 24 D8 26 9B 10 45 D9 9B -- 015760
DC 5E DD 9B EE D9 9B E8 5E D9 9B 10 C4 83 00 64 -- 015770
9B 06 76 00 5C ED 94 9A DC 5E DC 9B E8 46 D9 9B -- 015780
E8 5E D9 9B E0 D9 9B E8 46 D9 9B 07 EB E8 46 D9 -- 015790
9A 04 64 D8 26 9B 04 45 D9 9B 0A 7E C5 0E 76 C4 -- 0157A0
D8 26 9B 05 D9 9B 0A 7E C5 0E 76 C4 00 5C ED 99 -- 0157B0
D9 9B 10 C4 83 00 64 53 78 9A 00 5C ED 99 9A 24 -- 0157C0
5E DC 9B E4 46 D9 9B DC 5E DD 9B EE D9 9B E4 5E -- 0157D0
D9 9B 07 EB E4 46 D9 9B 06 76 00 5C ED 94 9A DC -- 0157E0
9B 50 58 06 DF 2E 9B E4 5E D9 9B E0 D9 9B E4 46 -- 0157F0
5E DC 9B E4 76 D8 9B E8 46 D9 9B DC 5E DD 01 FE -- 015800
46 D9 9B 00 AC E9 C0 2B 05 76 00 5C ED 94 9A DC -- 015810
08 6A 3A 74 00 16 7E 83 18 5D D9 9B 12 7E C5 E8 -- 015820
5C ED 6E 9A 12 76 FF 14 76 FF 0E 76 FF 10 76 FF -- 015830
8B 14 76 FF 0A 76 FF 0C 76 FF 08 6A 0A C4 83 00 -- 015840
7E C5 0A C4 83 00 5C ED 6E 9A 50 00 08 05 12 46 -- 015850

0A 76 FF 0C 76 FF 08 6A 38 EB 00 01 1C 45 C7 12 -- 015860
08 6A 0A C4 83 00 5C ED 6E 9A 12 76 FF 14 76 FF -- 015870
50 00 08 05 12 46 8B 14 76 FF 0E 76 FF 10 76 FF -- 015880
00 00 1C 45 C7 12 7E C5 0A C4 83 00 5C ED 6E 9A -- 015890
1C 44 2B 26 00 01 B8 12 76 C4 10 75 02 18 7E 83 -- 0158A0
98 3E 45 88 12 7E C5 00 41 B8 1C 45 89 12 7E C5 -- 0158B0
57 56 CB 5E 5F C9 9B 00 01 B8 1E 45 88 12 7E C5 -- 0158C0
28 1E DC 2E 9B 0E 45 D9 9B 0A 7E C5 00 00 2C C8 -- 0158D0
9B 0E 45 D9 9B 0E 7E C5 14 72 00 5C ED 94 9A 50 -- 0158E0
9B 0A 7E C5 2E 73 00 5C ED 94 9A 50 28 1E DC 2E -- 0158F0
03 72 00 5C ED 94 9A 50 28 1E DC 2E 9B 0E 45 D9 -- 015900
50 28 1E DC 2E 9B 0E 45 D9 9B 0E 7E C5 02 85 E9 -- 015910
12 46 8B 14 76 FF 02 6E E9 03 72 00 5C ED 94 9A -- 015920
45 D9 9B 0A 7E C5 12 76 FF 14 76 FF 50 00 04 05 -- 015930
04 45 D9 9B 0A 7E C5 00 5C ED 99 9A E0 D9 9B 12 -- 015940
00 5C ED 99 9A 05 D9 9B 0A 7E C5 00 5C ED 99 9A -- 015950
9B 0E 7E C5 00 5C ED 99 9A 04 45 D9 9B 0E 7E C5 -- 015960
C4 30 C4 83 00 4C B0 08 9A 00 5C ED 99 9A 05 D9 -- 015970
EC 5E DD 9B 24 D8 26 9B 05 D9 9B 0A 7E C5 12 76 -- 015980
9B 0E 44 D8 26 9B 0E 45 D9 9B 0A 7E C5 0E 76 C4 -- 015990
DC 9B F4 76 DC 9B 0E 45 D9 9B 0E 7E C5 F4 5E DD -- 0159A0
46 8B 14 76 FF 1D D9 9B 05 D8 9B 12 7E C5 EC 4E -- 0159B0
D9 9B 0A 7E C5 12 76 FF 14 76 FF 50 00 04 05 12 -- 0159C0
99 9A 04 45 D9 9B 0A 7E C5 00 5C ED 99 9A 12 45 -- 0159D0
7E C5 00 5C ED 99 9A 05 D9 9B 0A 7E C5 00 5C ED -- 0159E0
05 D9 9B 12 7E C5 00 5C ED 99 9A 04 45 D9 9B 12 -- 0159F0
9B 30 C4 83 00 4C B0 08 9A 00 5C ED 99 9A 01 FE -- 015A00
5E DC 9B 0E 45 D9 9B 0E 7E C5 E4 5E DD 9B EE D9 -- 015A10
EB 0E 45 D9 9B 0E 7E C5 09 76 00 5C ED 94 9A E4 -- 015A20
9B EC 5E DD 9B E0 D9 9B 0E 45 D9 9B 0E 7E C5 0A -- 015A30
5E DC 9B 0E 45 D9 9B 0A 7E C5 F4 5E DD 9B EE D9 -- 015A40
EB 0E 45 D9 9B 0A 7E C5 09 76 00 5C ED 94 9A F4 -- 015A50
9A EC 5E DC 9B E0 D9 9B 0E 45 D9 9B 0A 7E C5 0A -- 015A60
0A 7E C5 DC 5E DD 9B EE D9 9B 2E 73 00 5C ED 94 -- 015A70
C5 09 76 00 5C ED 94 9A DC 5E DC 9B 0E 45 D9 9B -- 015A80
```

```
9B  0E  45  D9  9B  0A  7E  C5  38  EB  0E  45  D9  9B  0A  7E  --  015A90
D9  9B  0E  7E  C5  D4  5E  DD  9B  EE  D9  9B  2C  EB  E0  D9  --  015AA0
0E  7E  C5  09  76  00  5C  ED  94  9A  D4  5E  DC  9B  0E  45  --  015AB0
E0  D9  9B  0E  45  D9  9B  0E  7E  C5  0A  EB  0E  45  D9  9B  --  015AC0
0A  7E  C5  0E  5D  D9  9B  12  7E  C5  50  5A  0E  DC  2E  9B  --  015AD0
76  00  5C  ED  94  9A  50  28  1E  DC  2E  9B  0E  45  D9  9B  --  015AE0
D9  9B  12  7E  C5  E0  D9  9B  0E  45  D9  9B  12  7E  C5  11  --  015AF0
12  5D  D9  9B  12  7E  C5  12  45  D9  9B  0A  7E  C5  0E  5D  --  015B00
50  50  06  DC  2E  9B  0E  45  D9  9B  12  7E  C5  0A  76  C4  --  015B10
F4  5E  DD  9B  EE  D9  9B  FC  5E  D9  9B  12  44  D8  26  9B  --  015B20
94  9A  F4  5E  DC  9B  FC  66  D8  9B  50  50  06  DD  2E  9B  --  015B30
EB  FC  66  D8  9B  50  50  06  DD  2E  9B  0C  76  00  5C  ED  --  015B40
2E  9B  E0  D9  9B  FC  66  D8  9B  50  50  06  DD  2E  9B  0D  --  015B50
45  C7  12  7E  C5  0A  73  00  5C  ED  94  9A  50  12  1E  DC  --  015B60
46  D9  9B  00  00  08  45  C7  12  7E  C5  20  EB  00  01  08  --  015B70
7E  C5  08  C4  83  00  64  30  0A  9A  00  5C  ED  99  9A  FC  --  015B80
5E  5F  C9  9B  C0  2B  02  EB  00  01  B8  0A  5D  D9  9B  12  --  015B90
83  00  01  05  C7  50  02  3E  C5  2E  EC  8B  55  57  56  CB  --  015BA0
76  FF  12  76  FF  14  76  FF  16  76  FF  1F  74  00  18  7E  --  015BB0
83  00  1C  1C  D9  9A  0A  76  FF  0C  76  FF  0E  76  FF  10  --  015BC0
10  76  FF  12  76  FF  14  76  FF  16  76  FF  1D  EB  0E  C4  --  015BD0
C4  83  00  1C  0E  4C  9A  0A  76  FF  0C  76  FF  0E  76  FF  --  015BE0
1E  76  FF  20  76  FF  00  00  05  C7  50  02  3E  C5  2E  0E  --  015BF0

08  C4  83  00  1C  0D  D8  9A  1A  76  FF  1C  76  FF  01  FE  --  015C00
00  3C  F0  1E  00  3C  F0  1C  00  3C  F0  2E  CB  5E  5F  C9  --  015C10
00  3C  F0  EC  00  3C  ED  70  00  3C  F0  28  00  3C  F0  24  --  015C20
00  3C  ED  D0  00  3C  ED  4C  00  3C  ED  4E  00  3C  F0  26  --  015C30
00  3C  ED  72  00  3C  F0  20  00  3C  ED  4A  00  3C  EE  F0  --  015C40
00  3C  F0  F0  00  3C  ED  64  00  3C  ED  74  00  3C  ED  6A  --  015C50
00  3C  ED  5E  00  3C  ED  6E  00  3C  ED  7C  00  3C  ED  76  --  015C60
00  3C  F0  7A  00  3C  F0  64  00  3C  F0  4E  00  3C  ED  80  --  015C70
00  3C  F0  76  00  3C  F0  6E  00  3C  F0  72  00  3C  F0  6C  --  015C80
00  3C  F0  42  00  3C  F0  46  00  3C  F0  3E  00  3C  ED  6C  --  015C90
00  3C  F0  22  00  3C  F0  10  00  3C  F0  12  00  3C  F0  4A  --  015CA0
00  3C  F0  5C  00  3C  F0  14  00  3C  F0  A6  00  3C  F0  56  --  015CB0
40  00  00  00  00  00  00  00  00  3C  F0  60  00  3C  F0  58  --  015CC0
3F  D3  33  33  33  33  33  33  BF  D3  33  33  33  33  33  33  --  015CD0
00  3C  F0  18  00  3C  F0  16  00  3C  EC  10  00  3C  ED  62  --  015CE0
00  3C  ED  7E  00  3C  F0  1A  00  3C  ED  52  00  3C  ED  56  --  015CF0
00  3C  EC  3F  00  3C  ED  54  00  3C  F0  2C  00  3C  ED  5A  --  015D00
00  3C  F0  BC  00  3C  EC  A3  00  3C  ED  68  00  3C  EC  74  --  015D10
00  3C  F0  88  00  3C  F0  82  00  3C  F0  90  00  3C  F0  D2  --  015D20
00  3C  EC  D2  00  3C  F0  E8  00  3C  F0  8C  00  3C  F0  84  --  015D30
00  3C  F0  E0  00  3C  F0  DC  00  3C  F0  DA  00  3C  EC  F2  --  015D40
00  3C  F0  CE  00  3C  F0  C6  00  3C  F0  CA  00  3C  F0  C4  --  015D50
00  3C  ED  78  00  3C  ED  2E  00  3C  ED  12  00  3C  ED  50  --  015D60
14  7B  27  10  00  3C  F0  FC  3F  50  62  4D  D2  F1  A9  FC  --  015D70
00  00  00  00  00  00  00  00  00  00  3F  94  7A  E1  47  AE  --  015D80
14  7B  3F  F9  1F  E4  36  75  DD  D3  BF  F0  00  00  00  00  --  015D90
2D  18  3F  E0  00  00  00  00  00  00  3F  74  7A  E1  47  AE  --  015DA0
3F  B9  99  99  99  99  99  9A  00  28  40  09  21  FB  54  44  --  015DB0
00  00  F2  46  C7  00  00  F0  46  C7  00  00  26  C8  57  56  --  015DC0
C7  9C  DE  3E  C5  2E  00  1C  97  EE  9A  00  54  C8  1C  9A  --  015DD0
00  3D  83  9C  E2  3E  C5  2E  00  64  22  15  9A  00  09  05  --  015DE0
00  01  05  C7  9C  E6  3E  C5  2E  00  54  08  FD  9A  05  74  --  015DF0
9C  EE  3E  C5  2E  00  00  05  C7  9C  EA  3E  C5  2E  01  FE  --  015E00
3E  C5  2E  00  01  05  C7  9C  F2  3E  C5  2E  00  00  05  C7  --  015E10
C7  00  00  05  C7  9C  FA  3E  C5  2E  00  00  05  C7  9C  F6  --  015E20
8B  32  74  04  F4  7E  83  F4  46  FF  03  EB  00  00  F4  46  --  015E30
```

```
9B 9D 00 1E 8E 2E 9C FE 3E 03 2E 02 E7 C1 F4 7E -- 015E40
EE 14 9A 00 5C ED 99 9A 15 D9 9B 9D 02 06 DF 2E -- 015E50
EB DA 45 88 F4 7E 03 1F 16 FD 8B 08 C4 83 00 5C -- 015E60
9D 06 36 FF 2E 50 DA 46 8D 16 50 F6 46 8D 16 C5 -- 015E70
83 00 64 40 D0 9A 01 97 68 06 6A 9D 04 36 FF 2E -- 015E80
08 3E C5 2E 00 54 46 A1 9A 00 14 DD BA 9A 10 C4 -- 015E90
2E 00 01 05 C7 9D 0C 3E C5 2E 22 74 00 3D 83 9D -- 015EA0
3E C5 2E 05 89 9D 10 3E C5 2E 05 8B 9D 14 3E C5 -- 015EB0
00 05 C7 9D 0C 3E C5 2E 1B EB 00 35 05 C7 9D 18 -- 015EC0
C7 9D 18 3E C5 2E 00 04 05 C7 9D 10 3E C5 2E 00 -- 015ED0
01 50 E9 03 74 00 3D 83 9D 0C 3E C5 2E 00 26 05 -- 015EE0
0F 74 10 F4 7E 83 F4 46 FF 03 EB 00 00 F4 46 C7 -- 015EF0
2E E8 EB 05 88 F4 46 8B F4 7E 03 9D 1C 3E C5 2E -- 015F00
FF 2E 50 F6 46 8D 16 FD 46 88 05 8B 9D 10 3E C5 -- 015F10
6A 10 6A 50 FD 46 8D 16 9D 1C 36 FF 2E 9D 1E 36 -- 015F20
83 00 64 40 D0 9A 01 43 68 0A 6A 00 6A 02 6A 01 -- 015F30
8B 9D 10 3E C5 2E 00 FE 46 C6 00 FF 46 C6 18 C4 -- 015F40
00 FB 46 C6 00 FA 46 C6 00 F9 46 C6 F8 46 88 05 -- 015F50
50 E4 2A FE 46 8A 50 F8 46 8D 16 50 F6 46 8D 16 -- 015F60
00 64 40 D0 9A 01 32 68 06 6A 50 E4 2A FF 46 8A -- 015F70
16 1C 7E 00 01 3D 05 8B 9D 20 3E C5 2E 10 C4 83 -- 015F80
04 6A 9D 24 36 FF 2E 9D 26 36 FF 2E 50 F6 46 8D -- 015F90

50 F6 46 8D 16 0C C4 83 00 64 40 D0 9A 01 F8 68 -- 015FA0
64 40 D0 9A 01 F6 68 03 6A 35 FF 9D 28 3E C5 2E -- 015FB0
F6 46 8D 16 16 05 C6 9D 2C 3E C5 2E 0A C4 83 00 -- 015FC0
6A 05 6A 01 6A 9D 2C 36 FF 2E 9D 2E 36 FF 2E 50 -- 015FD0
16 6A 50 F6 46 8D 16 0E C4 83 00 64 40 D0 9A 6E -- 015FE0
F6 46 8D 16 0A C4 83 00 64 40 D0 9A 6F 6A 03 6A -- 015FF0
9A 01 F5 68 03 6A 35 FF 9D 28 3E C5 2E 50 01 FE -- 016000
DE 9A 35 FF 9D 10 3E C5 2E 0A C4 83 00 64 40 D0 -- 016010
9D 26 36 FF 2E 50 F6 46 8D 16 02 C4 83 00 5C B3 -- 016020
83 00 64 40 D0 9A 01 F8 68 04 6A 9D 24 36 FF 2E -- 016030
36 FF 2E 9D 36 36 FF 2E 01 6A FF 6A 12 6A 0C C4 -- 016040
5C 93 FD 9A 9D 30 36 FF 2E 9D 32 36 FF 2E 9D 34 -- 016050
00 5C ED 6E 9A 50 DE 46 8D 16 50 52 0C C4 83 00 -- 016060
16 F2 56 89 F0 46 89 E0 56 8B DE 46 8B 0A C4 83 -- 016070
76 FF 9D 38 36 FF 2E 9D 3A 36 FF 2E 50 F6 46 8D -- 016080
DE 46 8D 16 0C C4 83 00 54 F6 E3 9A F0 76 FF F2 -- 016090
57 56 CB 5E 5F C9 9B 04 C4 83 00 5C 94 D5 9A 50 -- 0160A0
46 89 9D 3E 16 8B 2E 9D 3C 06 8B 2E 00 00 0A C8 -- 0160B0
DC FE 46 69 FE 46 89 05 8B FA 7E C5 FC 56 89 FA -- 0160C0
F8 56 89 F6 46 89 02 49 05 FC 56 8B FA 46 03 03 -- 0160D0
FA 7E 03 F8 8B 03 DC FE 46 69 00 05 C6 F6 7E C5 -- 0160E0
FF FC 76 FF 07 BA 68 00 11 03 DC 85 C7 FC 5E 8E -- 0160F0
36 FF 2E 9D 42 36 FF 2E 00 6A 0A 6A 04 6A FA 76 -- 016100
89 05 8B FA 7E C5 10 C4 83 00 5C A5 FF 9A 9D 40 -- 016110
0A 76 FF 0C 76 FF 26 74 00 3D 80 F6 7E C5 FE 46 -- 016120
51 CA 8B D8 8B FC 56 8B FA 46 03 03 DC FE 46 69 -- 016130
07 EB 08 C4 83 00 1C 55 B1 9A 50 02 49 05 C3 8B -- 016140
00 10 C8 57 56 CB 5E 5F C9 00 03 05 C7 0A 7E C5 -- 016150
8C 00 02 9A 10 6A 00 6A 50 F0 46 8D 16 57 56 00 -- 016160
83 00 5C D0 03 9A 0F 6A 50 F0 46 8D 16 5E 5F 00 -- 016170
FF 2E 9D 44 36 FF 2E 9D 46 36 FF 2E 57 56 06 C4 -- 016180
5F 00 5C FE EC 9A 54 6A 9D 30 36 FF 2E 9D 32 36 -- 016190
00 54 05 9D 44 06 8B 2E 9D 46 36 FF 2E 57 56 5E -- 0161A0
FE EC 9A 12 6A 9D 34 36 FF 2E 9D 36 36 FF 2E 50 -- 0161B0
9D 44 06 8B 2E 9D 46 36 FF 2E 57 56 5E 5F 00 5C -- 0161C0
00 5C FE EC 9A 0F 6A 50 F0 46 8D 16 50 00 57 05 -- 0161D0
8D 16 57 56 00 00 10 C8 57 56 CB 5E 5F C9 5E 5F -- 0161E0
```

106

```
8D 16 5E 5F 00 8C 00 02 9A 10 6A 00 6A 50 F0 46 -- 0161F0
FF 06 C4 83 00 5C D0 03 9A 0F 6A 50 F0 46 01 FE -- 016200
83 00 1C 55 B1 9A 50 F0 46 8D 16 0A 76 FF 0C 76 -- 016210
E6 3E C5 2E 00 00 04 C8 57 56 CB 5E 5F C9 08 C4 -- 016220
36 74 00 3D 83 9D 20 3E C5 2E 5C 75 00 3D 83 9C -- 016230
6A 9D 24 36 FF 2E 9D 26 36 FF 2E 50 FC 46 8D 16 -- 016240
00 FC 7E 83 0C C4 83 00 64 40 D0 9A 01 F8 68 04 -- 016250
3E C5 2E 02 C4 83 00 44 56 66 9A FC 76 FF 0B 74 -- 016260
9D 28 3E C5 2E 50 FC 46 8D 16 00 00 05 C7 9D 20 -- 016270
83 00 64 40 D0 9A 01 F6 68 03 6A 50 0D FF 05 8B -- 016280
9D 48 3E C5 2E 00 01 05 C7 9C E6 3E C5 2E 0A C4 -- 016290
3E C5 2E 00 00 05 C7 9D 4C 3E C5 2E 00 01 05 C7 -- 0162A0
2E 00 00 05 C7 9D 54 3E C5 2E 00 03 05 C7 9D 50 -- 0162B0
00 05 C7 9D 5C 3E C5 2E 00 00 05 C7 9D 58 3E C5 -- 0162C0
D9 9B 9D 60 3E C5 2E EE D9 9B 00 1C 61 CF 9A 00 -- 0162D0
FE 46 FF 03 EB 00 00 FE 46 C7 00 1C 63 F6 9A 1D -- 0162E0
9D 64 3E 03 2E E7 D1 FE 7E 8B 15 74 0A FE 7E 83 -- 0162F0
00 5C 9C EC 9A E2 EB 00 32 05 C7 9D 66 1E 8E 2E -- 016300
00 00 FC 46 C7 00 04 BC C8 57 56 CB 5E 5F C9 9B -- 016310
C7 00 00 FA 46 C7 00 00 F8 46 C7 00 00 FE 46 C7 -- 016320
9D 6A 36 FF 2E 57 56 00 00 F6 46 C7 00 00 F4 46 -- 016330

6A 9D 30 36 FF 2E 9D 32 36 FF 2E 9D 68 36 FF 2E -- 016340
2E 9D 6E 36 FF 2E 57 56 5E 5F 00 5C FE EC 9A 54 -- 016350
12 6A 9D 34 36 FF 2E 9D 36 36 FF 2E 9D 6C 36 FF -- 016360
8B 2E 9D 6E 36 FF 2E 57 56 5E 5F 00 5C FE EC 9A -- 016370
9A 0F 6A 0A 76 FF 0C 76 FF 50 00 03 05 9D 6C 06 -- 016380
36 FF 2E 9D 72 36 FF 2E 57 56 5E 5F 00 5C FE EC -- 016390
EC 9A 54 6A 9D 30 36 FF 2E 9D 32 36 FF 2E 9D 70 -- 0163A0
74 36 FF 2E 9D 76 36 FF 2E 57 56 5E 5F 00 5C FE -- 0163B0
FE EC 9A 12 6A 9D 34 36 FF 2E 9D 36 36 FF 2E 9D -- 0163C0
9D 74 06 8B 2E 9D 76 36 FF 2E 57 56 5E 5F 00 5C -- 0163D0
5C FE EC 9A 0F 6A 0A 76 FF 0C 76 FF 50 00 03 05 -- 0163E0
2E 9D 78 36 FF 2E 9D 7A 36 FF 2E 57 56 5E 5F 00 -- 0163F0
FE EC 9A 66 6A 9D 30 36 FF 2E 9D 32 36 FF 01 FE -- 016400
9D 7C 36 FF 2E 9D 7E 36 FF 2E 57 56 5E 5F 00 5C -- 016410
5C FE EC 9A 66 6A 9D 68 36 FF 2E 9D 6A 36 FF 2E -- 016420
2E 9D 44 36 FF 2E 9D 46 36 FF 2E 57 56 5E 5F 00 -- 016430
00 5C FE EC 9A 54 6A 9D 30 36 FF 2E 9D 32 36 FF -- 016440
54 05 9D 44 06 8B 2E 9D 46 36 FF 2E 57 56 5E 5F -- 016450
EC 9A 12 6A 9D 34 36 FF 2E 9D 36 36 FF 2E 50 00 -- 016460
80 3E C5 2E 00 03 05 C7 0E 7E C5 5E 5F 00 5C FE -- 016470
2E 00 1C 7B 07 9A 00 1C 54 C2 9A 00 01 05 C7 9D -- 016480
6A 12 6A 05 89 9D 84 3E C5 2E 05 8B 9D 18 3E C5 -- 016490
36 FF 2E 9D 6C 36 FF 2E 9D 6E 36 FF 2E 01 6A FF -- 0164A0
52 0C C4 83 00 5C 93 FD 9A 9D 68 36 FF 2E 9D 6A -- 0164B0
8B 0A C4 83 00 5C ED 6E 9A 50 FF 66 86 8D 16 50 -- 0164C0
18 EB 00 01 05 C7 9C E2 3E C5 2E 16 EB FF 72 86 -- 0164D0
F0 74 00 02 3D 0D EB 00 00 05 C7 9C E2 3E C5 2E -- 0164E0
D5 9A 50 FF 66 86 8D 16 07 BA E9 E0 74 00 14 3D -- 0164F0
00 00 FB 7A 86 C7 FB C6 86 89 04 C4 83 00 5C 94 -- 016500
BE 8B 16 74 01 00 FB 7A BE 81 FB 7A 86 FF 04 EB -- 016510
05 C7 9D 8A 1E 8E 2E 9D 88 3E 03 2E E7 D1 FB 7A -- 016520
03 74 00 01 3D 05 8B 9C E2 3E C5 2E DE EB 00 01 -- 016530
FF 6A 12 6A 00 01 05 C7 9D 8C 3E C5 2E 03 13 E9 -- 016540
6A 36 FF 2E 9D 6C 36 FF 2E 9D 6E 36 FF 2E 02 6A -- 016550
50 52 0C C4 83 00 5C 93 FD 9A 9D 68 36 FF 2E 9D -- 016560
12 6A 0A C4 83 00 5C ED 6E 9A 50 FF 66 86 8D 16 -- 016570
2E 9D 92 36 FF 2E 9D 6C 36 FF 2E 9D 6E 36 FF 2E -- 016580
8D 16 57 56 0A C4 83 00 5C ED 6E 9A 9D 90 36 FF -- 016590
```

107

```
5E  5F  00  8C  00  02  9A  02  4E  68  00  6A  50  FC  BC  86  --  0165A0
FC  C2  96  89  FC  C0  86  89  FF  68  96  8B  FF  66  86  8B  --  0165B0
BC  86  8D  16  50  FC  98  86  8D  16  00  00  FB  7C  86  C7  --  0165C0
86  89  0A  C4  83  00  5C  48  F8  9A  FB  7C  B6  FF  50  FC  --  0165D0
56  66  9A  FF  78  B6  FF  0C  74  00  FF  78  BE  83  FF  78  --  0165E0
FF  7A  86  8D  16  00  01  FF  0E  86  C7  02  C4  83  00  44  --  0165F0
9A  50  FC  BC  86  8D  16  50  FF  0E  86  8D  16  50  01  FE  --  016600
00  FF  78  BE  83  FF  78  86  89  0C  C4  83  00  5C  4D  20  --  016610
86  8A  02  C4  83  00  44  56  66  9A  FF  78  B6  FF  0C  74  --  016620
83  00  64  4E  56  9A  50  07  C7  6B  F8  8B  E4  2A  FF  53  --  016630
E4  2A  FF  51  86  8A  FF  0C  96  89  FF  0A  86  89  02  C4  --  016640
86  89  02  C4  83  00  64  4E  56  9A  50  28  C7  6B  F8  8B  --  016650
B6  FF  FF  0C  B6  FF  00  6A  00  6A  FB  78  96  89  FB  76  --  016660
50  FB  7F  86  8D  16  FB  76  B6  FF  FB  78  B6  FF  FF  0A  --  016670
86  89  14  C4  83  00  5C  4E  3D  9A  50  FC  BC  86  8D  16  --  016680
56  66  9A  FF  78  B6  FF  0C  74  00  FF  78  BE  83  FF  78  --  016690
7A  86  FF  04  EB  00  00  FB  7A  86  C7  02  C4  83  00  44  --  0166A0
7A  86  6B  23  74  FB  7A  86  3B  E4  2A  FF  53  86  8A  FB  --  0166B0
E7  D1  3D  8B  FF  0C  9E  8E  FF  0A  BE  03  F8  8B  07  FB  --  0166C0
CD  EB  00  02  05  C7  9D  8A  1E  8E  2E  9D  88  3E  03  2E  --  0166D0

C5  2E  FB  C4  86  8B  FB  C4  86  89  05  8B  FF  0A  BE  C5  --  0166E0
75  00  02  3D  05  8B  9D  14  3E  C5  2E  05  89  9D  14  3E  --  0166F0
94  3E  C5  2E  09  EB  00  01  05  C7  9D  94  3E  C5  2E  0B  --  016700
36  FF  2E  50  FF  2C  86  8D  16  68  6A  00  02  05  C7  9D  --  016710
52  08  C4  83  00  5C  91  A4  9A  9D  98  36  FF  2E  9D  9A  --  016720
6A  0A  C4  83  00  5C  ED  6E  9A  50  FC  30  86  8D  16  50  --  016730
9C  36  FF  2E  9D  9E  36  FF  2E  50  FC  30  86  8D  16  66  --  016740
04  45  8B  FF  0A  BE  C5  0A  C4  83  00  5C  ED  6E  9A  9D  --  016750
3E  C5  2E  50  FB  80  86  8D  16  05  89  9D  A0  3E  C5  2E  --  016760
83  00  5C  4D  59  9A  50  FC  BC  86  8D  16  35  FF  9D  A0  --  016770
78  B6  FF  0C  74  00  FF  78  BE  83  FF  78  86  89  0A  C4  --  016780
9A  50  FC  BC  86  8D  16  02  C4  83  00  44  56  66  9A  FF  --  016790
94  D5  9A  50  FF  66  86  8D  16  04  C4  83  00  5C  49  0B  --  0167A0
0A  B6  FF  FF  0C  B6  FF  FB  C6  86  89  04  C4  83  00  5C  --  0167B0
76  B6  FF  FB  78  B6  FF  04  C4  83  00  64  4E  E3  9A  FF  --  0167C0
FB  9E  86  8D  16  68  6A  04  C4  83  00  64  4E  E3  9A  FB  --  0167D0
00  5C  91  A4  9A  9D  98  36  FF  2E  9D  9A  36  FF  2E  50  --  0167E0
00  5C  ED  6E  9A  50  FC  30  86  8D  16  50  52  08  C4  83  --  0167F0
FC  96  B6  FF  0C  74  00  FC  96  BE  83  0A  C4  83  01  FE  --  016800
50  FC  84  86  8D  16  12  6A  02  C4  83  00  44  56  66  9A  --  016810
83  00  5C  ED  6E  9A  9D  6C  36  FF  2E  9D  6E  36  FF  2E  --  016820
6E  36  FF  2E  9D  A4  36  FF  2E  9D  A6  36  FF  2E  0A  C4  --  016830
9D  68  36  FF  2E  9D  6A  36  FF  2E  9D  6C  36  FF  2E  9D  --  016840
C7  9D  8C  3E  C5  2E  09  EB  0C  C4  83  00  4C  FF  58  9A  --  016850
2E  9D  68  36  FF  2E  9D  6A  36  FF  2E  66  6A  00  00  05  --  016860
C4  83  00  5C  ED  6E  9A  9D  A8  36  FF  2E  9D  AA  36  FF  --  016870
6C  36  FF  2E  9D  6E  36  FF  2E  01  6A  FF  6A  12  6A  0A  --  016880
00  5C  93  FD  9A  9D  68  36  FF  2E  9D  6A  36  FF  2E  9D  --  016890
83  00  5C  ED  6E  9A  50  E2  46  8D  16  50  52  0C  C4  83  --  0168A0
00  44  56  66  9A  F0  76  FF  0B  74  00  F0  7E  83  0A  C4  --  0168B0
16  FA  56  89  F8  46  89  E4  56  8B  E2  46  8B  02  C4  83  --  0168C0
FF  9D  AC  36  FF  2E  9D  AE  36  FF  2E  50  FF  78  86  8D  --  0168D0
3E  C5  2E  0C  C4  83  00  54  F6  E3  9A  F8  76  FF  FA  76  --  0168E0
C5  2E  00  01  05  C7  0E  7E  C5  12  74  00  3D  83  9D  B0  --  0168F0
00  02  05  C7  0E  7E  C5  10  EB  00  01  05  C7  9D  B4  3E  --  016900
2E  01  6A  FF  6A  12  6A  00  00  05  C7  9D  B4  3E  C5  2E  --  016910
FF  2E  9D  32  36  FF  2E  9D  34  36  FF  2E  9D  36  36  FF  --  016920
46  8D  16  50  52  0C  C4  83  00  5C  93  FD  9A  9D  30  36  --  016930
D2  56  8B  D0  46  8B  0A  C4  83  00  5C  ED  6E  9A  50  D0  --  016940
```

```
3A 36 FF 2E 50 FF 78 86 8D 16 F6 56 89 F4 46 89 -- 016950
54 F6 E3 9A F4 76 FF F6 76 FF 9D 38 36 FF 2E 9D -- 016960
C4 83 00 64 4E A1 9A 04 6A 02 00 68 0C C4 83 00 -- 016970
68 0E 75 C2 0B 02 55 89 05 89 9D B8 3E C5 2E 04 -- 016980
02 00 68 03 19 E9 02 C4 83 00 64 59 DC 9A 10 6D -- 016990
89 9D BC 3E C5 2E 04 C4 83 00 64 4E A1 9A 04 6A -- 0169A0
00 64 59 DC 9A 10 6D 68 0E 75 C2 0B 02 55 89 05 -- 0169B0
B8 3E C5 2E 50 FF 78 86 8D 16 02 F0 E9 02 C4 83 -- 0169C0
3A 36 FF 2E F4 76 FF F6 76 FF 35 FF 02 75 FF 9D -- 0169D0
12 C4 83 00 1C 84 C0 9A 00 6A 9D 38 36 FF 2E 9D -- 0169E0
35 FF 02 75 FF 9D BC 3E C5 2E 50 FF 78 86 8D 16 -- 0169F0
36 FF 2E 9D AE 36 FF 2E F8 76 FF FA 76 FF 01 FE -- 016A00
E2 46 8D 16 12 C4 83 00 1C 84 C0 9A 01 6A 9D AC -- 016A10
D5 9A 50 D0 46 8D 16 04 C4 83 00 5C 94 D5 9A 50 -- 016A20
78 B6 FF 0C 74 00 FF 78 BE 83 04 C4 83 00 5C 94 -- 016A30
FF 2E 9D AE 36 FF 2E 02 C4 83 00 44 56 66 9A FF -- 016A40
15 55 9A 9D A4 36 FF 2E 9D A6 36 FF 2E 9D AC 36 -- 016A50
E9 03 75 00 3D 83 9C E2 3E C5 2E 08 C4 83 00 4C -- 016A60
FF 2E 50 FF 2C 86 8D 16 01 6A 01 6A 12 6A 01 E4 -- 016A70

0C C4 83 00 5C 94 45 9A 9D 98 36 FF 2E 9D 9A 36 -- 016A80
0A C4 83 00 5C ED 6E 9A 50 FF 54 86 8D 16 50 52 -- 016A90
00 44 56 66 9A FF 62 B6 FF 0C 74 00 FF 62 BE 83 -- 016AA0
56 89 FC 46 89 FF 56 96 8B FF 54 86 8B 02 C4 83 -- 016AB0
2E 04 C4 83 00 64 43 A9 9A FC 76 FF FE 76 FF FE -- 016AC0
36 FF 2E 57 56 00 44 5E 3A 9A 05 89 9D C0 3E C5 -- 016AD0
00 8C 00 02 9A 0A 6A 00 6A 9D C4 36 FF 2E 9D C6 -- 016AE0
2E 9D 9A 36 FF 2E 50 FF 2C 86 8D 16 68 6A 5E 5F -- 016AF0
8D 16 50 52 08 C4 83 00 5C 91 A4 9A 9D 98 36 FF -- 016B00
8D 16 12 6A 0A C4 83 00 5C ED 6E 9A 50 FB C8 86 -- 016B10
6E 9A 9D C8 36 FF 2E 9D CA 36 FF 2E 50 FC 1C 86 -- 016B20
FF 2E 50 FB C8 86 8D 16 66 6A 0A C4 83 00 5C ED -- 016B30
0A C4 83 00 5C ED 6E 9A 9D CC 36 FF 2E 9D CE 36 -- 016B40
BC 9A 04 C4 83 00 5C 60 DD 9A FC 76 FF FE 76 FF -- 016B50
C4 83 00 1C 86 FF 9A 50 FF 78 86 8D 16 00 4C 00 -- 016B60
55 8B 02 45 8B 9D D0 3E C5 2E 00 1C 7B F0 9A 04 -- 016B70
C7 00 00 FB 48 86 C7 FB 46 96 89 FB 44 86 89 04 -- 016B80
9D D4 3E C5 2E FB 7A 86 FF 04 EB 00 00 FB 7A 86 -- 016B90
7A BE 03 9D D8 3E C5 2E 3D 7D 05 3B FB 7A 86 8B -- 016BA0
FB 44 BE 03 02 E7 C1 FB 48 BE 8B E4 2A 05 8A FB -- 016BB0
48 BE 8B 05 8B 9D 14 3E C5 2E 05 89 FB 46 9E 8E -- 016BC0
FB 46 9E 8E FB 44 BE 03 02 E7 C1 FB 48 86 FF FB -- 016BD0
7A 86 FF 04 EB 00 00 FB 7A 86 C7 B2 EB 02 45 89 -- 016BE0
C5 2E 3D 7D 05 3B FB 7A 86 8B 9D DC 3E C5 2E FB -- 016BF0
48 BE 8B E4 2A 05 8A FB 7A BE 03 9D E0 3E 01 FE -- 016C00
C5 2E 05 89 FB 46 9E 8E FB 44 BE 03 02 E7 C1 FB -- 016C10
02 E7 C1 FB 48 86 FF FB 48 BE 8B 05 8B 9D 94 3E -- 016C20
48 86 8B B2 EB 02 45 89 FB 46 9E 8E FB 44 BE 03 -- 016C30
D5 9A 50 FF 54 86 8D 16 05 89 9D D0 3E C5 2E FB -- 016C40
D1 3D 8B 9D 14 3E C5 2E 2F EB 04 C4 83 00 5C 94 -- 016C50
2E 00 02 05 C7 9D 8A 1E 8E 2E 9D 88 3E 03 2E E7 -- 016C60
00 BC 9A 00 44 5E 3A 9A 00 02 05 C7 9D C0 3E C5 -- 016C70
FF 2E 9D E6 36 FF 2E 57 56 00 1C 7B F0 9A 00 4C -- 016C80
01 00 68 9D 88 36 FF 2E 9D 8A 36 FF 2E 9D E4 36 -- 016C90
C5 2E 05 8B 9D C0 3E C5 2E 5E 5F 00 5C FF 6A 9A -- 016CA0
57 56 CB 5E 5F C9 00 44 57 40 9A 05 89 9D E8 3E -- 016CB0
5F C9 02 C4 83 00 54 23 E4 9A 03 6A 00 00 02 C8 -- 016CC0
00 05 C7 9C FA 3E C5 2E 00 00 02 C8 57 56 CB 5E -- 016CD0
64 40 D0 9A 6F 6A 03 6A 14 6A 50 FE 46 8D 16 00 -- 016CE0
8D 16 15 74 00 3D 83 9D 0C 3E C5 2E 0A C4 83 00 -- 016CF0
```

```
C4 83 00 64 40 D0 9A 6F 6A 03 6A 35 6A 50 FE 46 -- 016D00
D0 9A 6F 6A 03 6A 26 6A 50 FE 46 8D 16 13 EB 0A -- 016D10
56 CB 5E 5F C9 00 54 6D 5C 9A 0A C4 83 00 64 40 -- 016D20
C5 2E 12 74 00 3D 83 9D EC 3E C5 2E EC 8B 55 57 -- 016D30
10 EB 00 01 05 C7 0A 7E C5 00 01 05 C7 9D F0 3E -- 016D40
00 02 05 C7 0A 7E C5 00 00 05 C7 9D F0 3E C5 2E -- 016D50
C7 9D B4 3E C5 2E 0B 74 00 3D 83 9D B0 3E C5 2E -- 016D60
5F C9 00 00 05 C7 9D B4 3E C5 2E 09 EB 00 01 05 -- 016D70
00 00 05 C7 9D F0 3E C5 2E EC 8B 55 57 56 CB 5E -- 016D80
05 C7 9D F0 3E C5 2E EC 8B 55 57 56 CB 5E 5F C9 -- 016D90
9D B4 3E C5 2E EC 8B 55 57 56 CB 5E 5F C9 00 01 -- 016DA0
3E C5 2E EC 8B 55 57 56 CB 5E 5F C9 00 00 05 C7 -- 016DB0
9A EC 8B 55 57 56 CB 5E 5F C9 00 01 05 C7 9D B4 -- 016DC0
5E 5F C9 9B 1D D9 9B 9D F4 3E C5 2E 00 5C CC ED -- 016DD0
9D F8 3E C5 2E 00 5C CC ED 9A EC 8B 55 57 56 CB -- 016DE0
C8 57 56 CB 5E 5F C9 9B 00 1C 60 C4 9A 1D D9 9B -- 016DF0
83 00 5C E0 79 9A 50 D8 46 8D 16 00 00 28 01 FE -- 016E00
D9 9B 1D D9 9B 9D F8 3E C5 2E E8 46 D9 9B 04 C4 -- 016E10

9B 00 1C 60 C4 9A 1D D9 9B 9D F4 3E C5 2E EC 46 -- 016E20
3D 83 9D B4 3E C5 2E EC 8B 55 57 56 CB 5E 5F C9 -- 016E30
9D F8 3E C5 2E 05 DD 9B 9D FC 3E C5 2E 26 74 00 -- 016E40
C5 2E 05 DD 9B 9E 00 3E C5 2E 1D D9 9B 2D D8 9B -- 016E50
05 C7 9C FA 3E C5 2E 1D D9 9B 2D D8 9D F4 3E -- 016E60
00 1C 72 57 9A 00 01 05 C7 9D 80 3E C5 2E 00 01 -- 016E70
9D B4 3E C5 2E 00 00 24 C8 57 56 CB 5E 5F C9 9B -- 016E80
5E D9 9B 05 DD 9B 9D FC 3E C5 2E 1A 74 00 3D 83 -- 016E90
9B 0E EB E4 5E D9 9B 05 DD 9B 9E 00 3E C5 2E E8 -- 016EA0
3E C5 2E E4 5E D9 9B EE D9 9B E8 5E D9 9B EE D9 -- 016EB0
9B 05 DD 9B 9E 04 3E C5 2E 1A 74 00 3D 83 9D F0 -- 016EC0
EB DC 5E D9 9B 05 DD 9B 9E 08 3E C5 2E E0 5E D9 -- 016ED0
2E DC 5E D9 9B EE D9 9B E0 5E D9 9B EE D9 9B 0E -- 016EE0
3D 83 9D B4 3E C5 2E 0A 75 00 3D 83 9D F0 3E C5 -- 016EF0
9D F8 3E C5 2E E8 66 D8 9B E0 46 D9 9B 20 74 00 -- 016F00
9D F4 3E C5 2E E4 66 D8 9B DC 46 D9 9B 1D D9 9B -- 016F10
80 3E C5 2E 00 01 05 C7 9C FA 3E C5 2E 1D D9 9B -- 016F20
56 CB 5E 5F C9 9B 00 1C 72 57 9A 00 01 05 C7 9D -- 016F30
DD 9B 9E 10 3E C5 2E 9E 14 36 C4 2E EC 8B 55 57 -- 016F40
36 C4 2E 1D D9 9B 9E 0C 3E C5 2E 34 DC 26 9B 05 -- 016F50
C5 2E 34 DC 26 9B 05 DD 9B 9E 1C 3E C5 2E 9E 20 -- 016F60
CB 5E 5F C9 9B 00 54 29 A2 9A 1D D9 9B 9E 18 3E -- 016F70
9B 9E 24 3E C5 2E 9E 28 36 C4 2E EC 8B 55 57 56 -- 016F80
C4 2E 1D D9 9B 9E 0C 3E C5 2E 34 DC 26 9B 05 DD -- 016F90
2E 34 DC 26 9B 05 DD 9B 9E 2C 3E C5 2E 9E 30 36 -- 016FA0
5E 5F C9 9B 00 54 29 A2 9A 1D D9 9B 9E 18 3E C5 -- 016FB0
9E 18 3E C5 2E 00 5C CC ED 9A EC 8B 55 57 56 CB -- 016FC0
00 54 29 A2 9A 1D D9 9B 9E 0C 3E C5 2E 15 D9 9B -- 016FD0
46 8D 16 57 56 00 00 90 C8 57 56 CB 5E 5F C9 9B -- 016FE0
46 8D 16 5E 5F 00 8C 00 02 9A 10 6A 00 6A 50 F0 -- 016FF0
86 C7 06 C4 83 00 5C D0 03 9A 0F 6A 50 F0 01 FE -- 017000
9D 78 36 FF 2E 9D 7A 36 FF 2E 66 6A 00 00 FF 70 -- 017010
46 8D 16 0A C4 83 00 5C ED 6E 9A 50 8A 46 8D 16 -- 017020
6A 08 C4 83 00 64 5B B4 9A 50 E1 46 8D 16 50 F0 -- 017030
9A 50 8A 46 8D 16 50 DE 46 8D 16 01 6A 05 6A 12 -- 017040
9A 50 FF 78 86 8D 16 50 52 0C C4 83 00 5C 93 FD -- 017050
FF 2E 6C 75 10 48 86 7E 81 0A C4 83 00 5C ED 6E -- 017060
5B B4 9A 50 8D 46 8D 16 9E 34 36 FF 2E 9E 36 36 -- 017070
16 06 6A 00 DF 46 C6 00 8B 46 C6 08 C4 83 00 64 -- 017080
8D 16 50 52 04 C4 83 00 5C 90 BE 9A 50 8A 46 8D -- 017090
05 6A 12 6A 0A C4 83 00 5C ED 6E 9A 50 FF 72 86 -- 0170A0
```

110

EP 0 533 348 A2

```
5C  93  FD  9A  50  8A  46  8D  16  50  DE  46  8D  16  01  6A  --  0170B0
5C  ED  6E  9A  50  FF  78  86  8D  16  50  52  0C  C4  83  00  --  0170C0
74  10  48  86  7E  81  00  01  FF  70  86  C7  0A  C4  83  00  --  0170D0
83  04  C4  83  00  5C  94  D5  9A  50  FF  78  86  8D  16  22  --  0170E0
00  5C  90  FA  9A  50  8A  46  8D  16  0D  74  00  FF  70  BE  --  0170F0
00  02  05  C7  0A  7E  C5  14  74  00  86  7E  83  04  C4  83  --  017100
0A  7E  C5  47  EB  02  C4  83  00  64  59  DC  9A  86  76  FF  --  017110
FF  2E  9E  3A  36  FF  2E  50  F0  46  8D  16  00  01  05  C7  --  017120
36  FF  2E  57  56  08  C4  83  00  64  5B  B4  9A  9E  38  36  --  017130
38  36  FF  2E  9E  3A  36  FF  2E  9E  3C  36  FF  2E  9E  3E  --  017140
54  23  E4  9A  05  6A  5E  5F  00  5C  FE  EC  9A  10  6A  9E  --  017150
3E  C5  2E  EC  8B  55  57  56  CB  5E  5F  C9  02  C4  83  00  --  017160
2E  9E  40  36  FF  2E  9E  42  36  FF  2E  31  05  C6  9E  38  --  017170
C4  83  00  64  5B  B4  9A  9E  3C  36  FF  2E  9E  3E  36  FF  --  017180
56  CB  5E  5F  C9  02  C4  83  00  54  23  E4  9A  05  6A  08  --  017190
46  36  FF  2E  32  05  C6  9E  38  3E  C5  2E  EC  8B  55  57  --  0171A0
9E  3C  36  FF  2E  9E  3E  36  FF  2E  9E  44  36  FF  2E  9E  --  0171B0

83  00  54  23  E4  9A  05  6A  08  C4  83  00  64  5B  B4  9A  --  0171C0
9E  38  3E  C5  2E  EC  8B  55  57  56  CB  5E  5F  C9  02  C4  --  0171D0
36  FF  2E  9E  48  36  FF  2E  9E  4A  36  FF  2E  33  05  C6  --  0171E0
6A  08  C4  83  00  64  5B  B4  9A  9E  3C  36  FF  2E  9E  3E  --  0171F0
56  CB  5E  5F  C9  02  C4  83  00  54  23  E4  9A  05  01  FE  --  017200
9B  9D  60  3E  C5  2E  9E  4C  06  DF  2E  9B  EC  8B  55  57  --  017210
5E  5F  C9  9B  02  C4  83  00  54  23  E4  9A  05  6A  1D  D9  --  017220
60  3E  C5  2E  9E  4E  06  DF  2E  9B  EC  8B  55  57  56  CB  --  017230
C9  9B  02  C4  83  00  54  23  E4  9A  05  6A  1D  D9  9B  9D  --  017240
C5  2E  9E  50  06  DF  2E  9B  EC  8B  55  57  56  CB  5E  5F  --  017250
02  C4  83  00  54  23  E4  9A  05  6A  1D  D9  9B  9D  60  3E  --  017260
2E  00  5C  CC  ED  9A  EC  8B  55  57  56  CB  5E  5F  C9  9B  --  017270
C4  83  00  54  23  E4  9A  05  6A  1D  D9  9B  9D  60  3E  C5  --  017280
00  FE  46  C7  00  00  12  C8  57  56  CB  5E  5F  C9  9B  02  --  017290
2E  00  54  6E  28  9A  00  01  05  C7  9C  EA  3E  C5  2E  00  --  0172A0
20  49  9A  50  EE  46  8D  16  00  00  05  C7  9C  EA  3E  C5  --  0172B0
D9  9B  9E  52  3E  C5  2E  EE  46  D9  9B  04  C4  83  00  2C  --  0172C0
46  D9  9B  1D  D9  9B  9E  56  3E  C5  2E  F2  46  D9  9B  1D  --  0172D0
46  D9  9B  1D  D9  9B  9E  5A  3E  C5  2E  FA  46  D8  9B  EE  --  0172E0
3E  C5  2E  1D  D9  9B  9E  5E  3E  C5  2E  F6  46  D8  9B  F2  --  0172F0
16  00  00  05  C7  9E  66  3E  C5  2E  00  00  05  C7  9E  62  --  017300
03  6A  50  05  8B  05  FF  9D  28  3E  C5  2E  50  FE  46  8D  --  017310
75  00  FE  7E  83  0A  C4  83  00  64  40  D0  9A  01  F5  68  --  017320
EB  05  89  9D  20  3E  C5  2E  05  8B  9D  28  3E  C5  2E  10  --  017330
6A  3E  C5  2E  02  C4  83  00  64  59  DC  9A  FE  76  FF  0B  --  017340
8B  9D  28  3E  C5  2E  00  1C  66  79  9A  00  00  05  C7  9E  --  017350
C8  57  56  CB  5E  5F  C9  9B  05  89  9D  54  3E  C5  2E  05  --  017360
9A  07  6A  0A  74  00  3D  83  9D  54  3E  C5  2E  00  00  02  --  017370
2E  05  D9  9B  9E  72  3E  C5  2E  02  C4  83  00  34  60  9C  --  017380
2E  05  D9  9B  9E  7A  3E  C5  2E  1D  D9  9B  9E  6E  3E  C5  --  017390
72  3E  C5  2E  9E  82  36  C4  2E  1D  D9  9B  9E  76  3E  C5  --  0173A0
1D  D9  9B  9E  7E  3E  C5  2E  04  D8  26  9B  05  D9  9B  9E  --  0173B0
D8  26  9B  05  D9  9B  9E  7A  3E  C5  2E  9E  8A  36  C4  2E  --  0173C0
00  34  60  9C  9A  09  6A  1D  D9  9B  9E  86  3E  C5  2E  04  --  0173D0
C8  57  56  CB  5E  5F  C9  9B  00  34  88  0D  9A  02  C4  83  --  0173E0
9A  07  6A  0A  74  00  3D  83  9D  54  3E  C5  2E  00  00  02  --  0173F0
D9  9B  9E  8E  3E  C5  2E  02  C4  83  00  34  60  9C  01  FE  --  017400
D9  9B  9E  92  3E  C5  2E  1D  D9  9B  9E  6E  3E  C5  2E  05  --  017410
C5  2E  9E  96  36  C4  2E  1D  D9  9B  9E  76  3E  C5  2E  05  --  017420
9B  9E  7E  3E  C5  2E  04  D8  26  9B  05  D9  9B  9E  8E  3E  --  017430
9B  05  D9  9B  9E  92  3E  C5  2E  9E  9A  36  C4  2E  1D  D9  --  017440
60  9C  9A  09  6A  1D  D9  9B  9E  86  3E  C5  2E  04  D8  26  --  017450
```

111

```
56 CB 5E 5F C9 9B 00 34 88 0D 9A 02 C4 83 00 34 -- 017460
6A 0A 74 00 3D 83 9D 54 3E C5 2E 00 00 12 C8 57 -- 017470
C5 2E 9E 82 36 C4 2E 02 C4 83 00 34 60 9C 9A 07 -- 017480
C4 2E FC 5E D9 9B 04 D8 26 9B 05 D9 9B 9E 72 3E -- 017490
9B 04 D8 26 9B 05 D9 9B 9E 7A 3E C5 2E 9E 8A 36 -- 0174A0
05 D9 9B 9E 8E 3E C5 2E 9E 96 36 C4 2E F8 5E D9 -- 0174B0
3E C5 2E 9E 9A 36 C4 2E F4 5E D9 9B 04 D8 26 9B -- 0174C0
36 C4 2E F0 5E D9 9B 04 D8 26 9B 05 D9 9B 9E 92 -- 0174D0
94 9A 1C D8 26 9B 05 D9 9B 9E 8E 3E C5 2E 9E 72 -- 0174E0
2E 08 EB 05 D9 9B 9E 8E 3E C5 2E 0A 73 00 5C ED -- 0174F0
2E 1D D9 9B 9E 6E 3E C5 2E 05 D9 9B 9E 72 3E C5 -- 017500
1C D8 26 9B 05 D9 9B 9E 92 3E C5 2E 9E 7A 36 C4 -- 017510
EB 05 D9 9B 9E 92 3E C5 2E 0A 73 00 5C ED 94 9A -- 017520
D9 9B 9E 76 3E C5 2E 05 D9 9B 9E 7A 3E C5 2E 08 -- 017530
06 76 00 5C ED 94 9A FC 5E D8 9B F4 46 D9 9B 1D -- 017540
9B 9E 7E 3E C5 2E FC 46 D9 9B 04 EB F4 46 D9 9B -- 017550

76 00 5C ED 94 9A F8 5E D8 9B F0 46 D9 9B 1D D9 -- 017560
9E 86 3E C5 2E F8 46 D9 9B 04 EB F0 46 D9 9B 06 -- 017570
88 0D 9A 02 C4 83 00 34 60 9C 9A 09 6A 1D D9 9B -- 017580
3E C5 2E 00 00 12 C8 57 56 CB 5E 5F C9 9B 00 34 -- 017590
C4 83 00 34 60 9C 9A 07 6A 0A 74 00 3D 83 9D 54 -- 0175A0
26 9B 05 D9 9B 9E 72 3E C5 2E 9E 82 36 C4 2E 02 -- 0175B0
9E 7A 3E C5 2E 9E 8A 36 C4 2E FC 5E D9 9B 04 D8 -- 0175C0
9E 96 36 C4 2E F8 5E D9 9B 04 D8 26 9B 05 D9 9B -- 0175D0
F4 5E D9 9B 04 D8 26 9B 05 D9 9B 9E 8E 3E C5 2E -- 0175E0
D8 26 9B 05 D9 9B 9E 92 3E C5 2E 9E 9A 36 C4 2E -- 0175F0
8E 3E C5 2E 9E 72 36 C4 2E F0 5E D9 9B 04 01 FE -- 017600
2E 0A 76 00 5C ED 94 9A 1C D8 26 9B 05 D9 9B 9E -- 017610
D9 9B 9E 72 3E C5 2E 08 EB 05 D9 9B 9E 8E 3E C5 -- 017620
C5 2E 9E 7A 36 C4 2E 1D D9 9B 9E 6E 3E C5 2E 05 -- 017630
76 00 5C ED 94 9A 1C D8 26 9B 05 D9 9B 9E 92 3E -- 017640
9E 7A 3E C5 2E 08 EB 05 D9 9B 9E 92 3E C5 2E 0A -- 017650
9B F4 46 D9 9B 1D D9 9B 9E 76 3E C5 2E 05 D9 9B -- 017660
04 EB F4 46 D9 9B 06 73 00 5C ED 94 9A FC 5E D8 -- 017670
F0 46 D9 9B 1D D9 9B 9E 7E 3E C5 2E FC 46 D9 9B -- 017680
EB F0 46 D9 9B 06 73 00 5C ED 94 9A F8 5E D8 9B -- 017690
9A 09 6A 1D D9 9B 9E 86 3E C5 2E F8 46 D9 9B 04 -- 0176A0
5E 5F C9 9B 00 34 88 0D 9A 02 C4 83 00 34 60 9C -- 0176B0
54 3E C5 2E 00 00 FE 46 C7 00 00 02 C8 57 56 CB -- 0176C0
3D 83 9D 58 3E C5 2E 00 91 E9 03 75 00 3D 83 9D -- 0176D0
76 70 9A 12 74 00 3D 83 9D 0C 3E C5 2E 1C 75 00 -- 0176E0
16 04 C4 83 00 64 13 07 9A 50 FE 46 8D 16 00 1C -- 0176F0
04 6A 9E 52 36 FF 2E 9E 54 36 FF 2E 50 FE 46 8D -- 017700
9D 20 3E C5 2E 0C C4 83 00 64 40 D0 9A 01 F8 68 -- 017710
05 8B 9D 28 3E C5 2E 50 FE 46 8D 16 00 00 05 C7 -- 017720
0A C4 83 00 64 40 D0 9A 01 F6 68 03 6A 50 0D FF -- 017730
00 64 40 D0 9A 6F 6A 03 6A 03 6A 50 FE 46 8D 16 -- 017740
54 3E C5 2E 00 00 05 C7 9E 6A 3E C5 2E 0A C4 83 -- 017750
57 56 CB 5E 5F C9 00 54 29 A2 9A 00 00 05 C7 9D -- 017760
00 3D 83 9D 5C 3E C5 2E 00 1C 69 49 9A EC 8B 55 -- 017770
EC 8B 55 57 56 CB 5E 5F C9 00 44 E1 6E 9A 05 74 -- 017780
55 57 56 CB 5E 5F C9 00 01 05 C7 9D 50 3E C5 2E -- 017790
56 CB 5E 5F C9 00 02 05 C7 9D 50 3E C5 2E EC 8B -- 0177A0
5E 5F C9 00 03 05 C7 9D 50 3E C5 2E EC 8B 55 57 -- 0177B0
06 DF 2E 9B 00 1C 6B EE 9A 00 00 10 C8 57 56 CB -- 0177C0
DC 9B 05 D9 9B 9E 82 3E C5 2E F0 5E DD 9B 9E A2 -- 0177D0
DC 9B 05 D9 9B 9E 72 3E C5 2E F8 5E DD 9B F0 76 -- 0177E0
A2 06 DF 2E 9B 10 5D D9 9B 9E 9E 3E C5 2E F8 46 -- 0177F0
9B 05 D9 9B 9E 8A 3E C5 2E F0 5E DD 9B 9E 01 FE -- 017800
```

112

```
9B  05  D9  9B  9E  7A  3E  C5  2E  F8  5E  DD  9B  F0  76  DC  --  017810
5E  5F  C9  9B  14  5D  D9  9B  9E  9E  3E  C5  2E  F8  46  DC  --  017820
9E  72  3E  C5  2E  00  1C  6B  EE  9A  EC  8B  55  57  56  CB  --  017830
7A  3E  C5  2E  10  5D  D9  9B  9E  9E  3E  C5  2E  05  D9  9B  --  017840
5F  C9  9B  14  5D  D9  9B  9E  9E  3E  C5  2E  05  D9  9B  9E  --  017850
E8  D9  9B  00  1C  6B  EE  9A  00  00  08  C8  57  56  CB  5E  --  017860
D9  9B  9E  72  3E  C5  2E  9E  82  36  C4  2E  F8  5E  DD  9B  --  017870
D9  9B  9E  9E  3E  C5  2E  F8  66  DC  9B  04  D8  26  9B  05  --  017880
9B  9E  9E  3E  C5  2E  05  D9  9B  9E  7A  3E  C5  2E  10  5D  --  017890
EE  9A  00  00  08  C8  57  56  CB  5E  5F  C9  9B  14  5D  D9  --  0178A0
9E  9E  3E  C5  2E  05  D9  9B  9E  72  3E  C5  2E  00  1C  6B  --  0178B0
9E  8A  36  C4  2E  F8  5E  DD  9B  E8  D9  9B  10  5D  D9  9B  --  0178C0
F8  66  DC  9B  04  D8  26  9B  05  D9  9B  9E  7A  3E  C5  2E  --  0178D0
57  56  CB  5E  5F  C9  9B  14  5D  D9  9B  9E  9E  3E  C5  2E  --  0178E0
F8  5E  DD  9B  E8  D9  9B  00  1C  6B  EE  9A  00  00  08  C8  --  0178F0

D8  26  9B  05  D9  9B  9E  72  3E  C5  2E  9E  82  36  C4  2E  --  017900
D9  9B  10  5D  D9  9B  9E  9E  3E  C5  2E  F8  66  DC  9B  04  --  017910
9B  9E  7A  3E  C5  2E  9E  8A  36  C4  2E  F8  5E  DD  9B  E8  --  017920
9B  9E  9E  3E  C5  2E  F8  66  DC  9B  04  D8  26  9B  05  D9  --  017930
6B  EE  9A  EC  8B  55  57  56  CB  5E  5F  C9  9B  14  5D  D9  --  017940
5C  E0  79  9A  9E  9E  36  FF  2E  9E  A0  36  FF  2E  00  1C  --  017950
8D  16  00  00  02  C8  57  56  CB  5E  5F  C9  04  C4  83  00  --  017960
77  44  9A  9D  A4  36  FF  2E  9D  A6  36  FF  2E  50  FE  46  --  017970
C5  2E  00  01  05  C7  9D  4C  3E  C5  2E  08  C4  83  00  1C  --  017980
64  13  49  9A  50  FE  46  8D  16  00  01  05  C7  9D  80  3E  --  017990
3E  C5  2E  EC  8B  55  57  56  CB  5E  5F  C9  04  C4  83  00  --  0179A0
02  C4  83  00  1C  6F  2C  9A  09  6A  00  00  05  C7  9E  A4  --  0179B0
C8  57  56  CB  5E  5F  C9  00  01  05  C7  9E  A4  3E  C5  2E  --  0179C0
28  05  6B  9E  A4  3E  C5  2E  00  09  CC  46  C7  00  00  3E  --  0179D0
5C  E0  79  9A  50  52  9E  A0  16  8B  2E  9E  9E  06  03  2E  --  0179E0
37  75  00  01  3D  05  8B  9D  50  3E  C5  2E  04  C4  83  00  --  0179F0
2E  F8  8B  28  C6  6B  4E  35  8B  9E  A4  3E  C5  2E  01  FE  --  017A00
36  C4  2E  14  45  D9  9B  9E  A0  1E  8E  2E  9E  9E  3E  03  --  017A10
1E  8E  2E  9E  9E  3E  03  2E  F8  8B  28  04  6B  26  9E  A4  --  017A20
05  8B  9D  50  3E  C5  2E  01  3D  E9  14  5D  D9  9B  9E  A0  --  017A30
28  C6  6B  4E  35  8B  9E  A4  3E  C5  2E  37  75  00  02  3D  --  017A40
10  45  D9  9B  9E  A0  1E  8E  2E  9E  9E  3E  03  2E  F8  8B  --  017A50
9E  9E  3E  03  2E  F8  8B  28  04  6B  26  9E  A4  36  C4  2E  --  017A60
50  3E  C5  2E  00  FA  E9  10  5D  D9  9B  9E  A0  1E  8E  2E  --  017A70
9E  A4  3E  C5  2E  00  EB  E9  03  74  00  03  3D  05  8B  9D  --  017A80
EB  00  00  EE  46  C7  00  DC  E9  03  74  00  02  3D  05  8B  --  017A90
F8  8B  28  EE  46  6B  46  74  02  EE  7E  83  EE  46  FF  03  --  017AA0
7E  8B  10  45  D9  9B  9E  A0  1E  8E  2E  9E  9E  3E  03  2E  --  017AB0
28  EE  46  6B  F8  5D  D9  9B  1F  16  FD  03  02  E7  C1  EE  --  017AC0
14  45  D9  9B  9E  A0  1E  8E  2E  9E  9E  3E  03  2E  F8  8B  --  017AD0
B1  EB  F0  5D  D9  9B  1F  16  FD  03  02  E7  C1  EE  7E  8B  --  017AE0
16  8B  2E  9E  9E  06  03  2E  28  05  6B  9E  A4  3E  C5  2E  --  017AF0
3E  C5  2E  50  00  14  05  C3  8B  51  CA  8B  D8  8B  9E  A0  --  017B00
8B  9E  A0  16  8B  2E  9E  9E  06  03  2E  28  05  6B  9E  A4  --  017B10
16  50  F0  46  8D  16  50  00  10  05  C3  8B  51  CA  8B  D8  --  017B20
03  2E  F8  8B  28  05  6B  9E  A4  3E  C5  2E  50  F8  46  8D  --  017B30
5C  ED  99  9A  14  45  D9  9B  9E  A0  1E  8E  2E  9E  9E  3E  --  017B40
9E  9E  3E  03  2E  F8  8B  28  05  6B  9E  A4  3E  C5  2E  00  --  017B50
4F  9A  00  5C  ED  99  9A  10  45  D9  9B  9E  A0  1E  8E  2E  --  017B60
02  C4  83  00  1C  6F  2C  9A  09  6A  20  C4  83  00  4C  B3  --  017B70
C7  00  E0  E9  03  74  00  01  3D  05  8B  9E  A4  3E  C5  2E  --  017B80
6B  46  74  02  EE  7E  83  EE  46  FF  03  EB  00  00  EE  46  --  017B90
9B  9E  A0  1E  8E  2E  9E  9E  3E  03  2E  F8  8B  28  EE  46  --  017BA0
5D  D9  9B  1F  16  FD  03  02  E7  C1  EE  7E  8B  10  45  D9  --  017BB0
```

```
AO 1E 8E 2E 9E 9E 3E 03 2E F8 8B 28 EE 46 6B F8 -- 017BC0
9B 1F 16 FD 03 02 E7 C1 EE 7E 8B 14 45 D9 9B 9E -- 017BD0
83 00 2C 20 49 9A 50 CE 46 8D 16 B1 EB F0 5D D9 -- 017BE0
D9 9B D2 46 D9 9B DE 5E D9 9B CE 46 D9 9B 04 C4 -- 017BF0
9B CE 46 D9 9B C2 5E DD 9B E8 D9 9B E6 5E 01 FE -- 017C00
DD 9B E8 D9 9B E2 5E D9 9B C2 66 DC 9B D6 46 D8 -- 017C10
D9 9B C2 66 DC 9B DA 46 D8 9B D2 46 D9 9B C2 5E -- 017C20
9A 01 2D 68 03 6A CC 76 FF 50 CA 46 8D 16 EA 5E -- 017C30
CA 76 FF 0B 74 00 CA 7E 83 0A C4 83 00 64 40 D0 -- 017C40
46 8D 16 50 DE 46 8D 16 02 C4 83 00 64 59 DC 9A -- 017C50
EB 0C C4 83 00 5C C9 24 9A 50 F8 46 8D 16 50 F0 -- 017C60
36 FF 2E 9E AE 36 FF 2E 35 FF 9D 50 3E C5 2E 2D -- 017C70
AO 36 FF 2E 9E A8 36 FF 2E 9E AA 36 FF 2E 9E AC -- 017C80
C5 2E 0E C4 83 00 5C C7 68 9A 9E 9E 36 FF 2E 9E -- 017C90

00 00 04 C8 57 56 CB 5E 5F C9 9B 05 FF 9E A4 3E -- 017CA0
C6 9D 2C 3E C5 2E 00 07 FC 46 C7 00 00 FE 46 C7 -- 017CB0
2C 36 FF 2E 9D 2E 36 FF 2E 50 FE 46 8D 16 03 05 -- 017CC0
16 0E C4 83 00 64 40 D0 9A 6E 6A 05 6A 01 6A 9D -- 017CD0
06 6A FC 76 FF 01 6A 02 6A 0A 76 FF 50 FE 46 8D -- 017CE0
74 00 FE 7E 83 10 C4 83 00 64 40 D0 9A 01 30 68 -- 017CF0
FE 46 8D 16 02 C4 83 00 64 59 DC 9A FE 76 FF 0B -- 017D00
C4 83 00 64 40 D0 9A 01 2F 68 03 6A FC 76 FF 50 -- 017D10
83 00 64 59 DC 9A FE 76 FF 0B 74 00 FE 7E 83 0A -- 017D20
2E 28 05 6B 9E A4 3E C5 2E 50 FE 46 8D 16 02 C4 -- 017D30
C3 8B 51 CA 8B D8 8B 9E A0 16 8B 2E 9E 9E 06 03 -- 017D40
9E 06 03 2E 28 05 6B 9E A4 3E C5 2E 50 00 14 05 -- 017D50
00 10 05 C3 8B 51 CA 8B D8 8B 9E A0 16 8B 2E 9E -- 017D60
12 C4 83 00 64 40 D0 9A 00 CA 68 07 6A 01 6A 50 -- 017D70
C4 83 00 64 59 DC 9A FE 76 FF 0B 74 00 FE 7E 83 -- 017D80
9E A8 3E C5 2E 00 00 12 C8 57 56 CB 5E 5F C9 02 -- 017D90
9E 3E C5 2E 9D F8 36 C4 2E EE 5E D9 9B 05 D9 9B -- 017DA0
5E DD 9B EE 4E D8 9B 24 D8 26 9B 10 45 D9 9B 9E -- 017DB0
C5 2E F6 66 DC 9B 10 45 D9 9B 9E 9E 3E C5 2E F6 -- 017DC0
D9 9B 05 D9 9B 9E AC 3E C5 2E 1D D9 9B 9D F8 3E -- 017DD0
14 45 D9 9B 9E 9E 3E C5 2E 9D F4 36 C4 2E EE 5E -- 017DE0
9E 3E C5 2E F6 5E DD 9B EE 4E D8 9B 24 D8 26 9B -- 017DF0
9D F4 3E C5 2E F6 66 DC 9B 14 45 D9 9B 9E 01 FE -- 017E00
9E B0 3E C5 2E 05 D9 9B 9E A8 3E C5 2E 1D D9 9B -- 017E10
C5 2E 05 D9 9B 9E AC 3E C5 2E 1D D9 9B 0D D8 9B -- 017E20
FF 2E 9D A6 36 FF 2E 1D D9 9B 0D D8 9B 9E B4 3E -- 017E30
9D 4C 3E C5 2E 04 C4 83 00 1C 78 3F 9A 9D A4 36 -- 017E40
72 57 9A 00 01 05 C7 9D 80 3E C5 2E 00 01 05 C7 -- 017E50
40 D0 9A 6F 6A 03 6A 03 6A 50 FE 46 8D 16 00 1C -- 017E60
16 0D 74 00 3D 83 9D 0C 3E C5 2E 0A C4 83 00 64 -- 017E70
5E 5F C9 9B 04 C4 83 00 64 13 07 9A 50 FE 46 8D -- 017E80
03 6A 03 6A 50 FE 46 8D 16 00 00 02 C8 57 56 CB -- 017E90
57 56 CB 5E 5F C9 0A C4 83 00 64 40 D0 9A 6F 6A -- 017EA0
9A 1D 75 00 03 3D 05 8B 9D 50 3E C5 2E EC 8B 55 -- 017EB0
9B 9E AC 3E C5 2E 9E B8 36 DC 2E 9B 00 5C CC ED -- 017EC0
50 3E C5 2E 50 EB 1D D9 9B 9E A8 3E C5 2E 15 D9 -- 017ED0
DC 2E 9B 00 5C CC ED 9A 23 75 00 02 3D 05 8B 9D -- 017EE0
C0 06 DD 2E 9B 1D D9 9B 9E AC 3E C5 2E 9E B8 36 -- 017EF0
00 5C CC ED 9A 21 EB 1D D9 9B 9E A8 3E C5 2E 9E -- 017F00
2E 9B 1D D9 9B 9E A8 3E C5 2E 9E B8 36 DC 2E 9B -- 017F10
5E 5F C9 9B 1D D9 9B 9E AC 3E C5 2E 9E C0 06 DD -- 017F20
00 03 3D 05 8B 9D 50 3E C5 2E EC 8B 55 57 56 CB -- 017F30
ED 9A 15 75 00 01 3D 05 8B 9D 50 3E C5 2E 0C 74 -- 017F40
D9 9B 9E A8 3E C5 2E 9E B8 36 DC 2E 9B 00 5C CC -- 017F50
D9 9B 9E A8 3E C5 2E 9E C0 06 DD 2E 9B 0E EB 1D -- 017F60
```

```
9B 1D D9 9B 9E AC 3E C5 2E 9E C0 06 DD 2E 9B 1D -- 017F70
05 8B 9D 50 3E C5 2E EC 8B 55 57 56 CB 5E 5F C9 -- 017F80
75 00 02 3D 05 8B 9D 50 3E C5 2E 0C 74 00 03 3D -- 017F90
AC 3E C5 2E 9E B8 36 DC 2E 9B 00 5C CC ED 9A 15 -- 017FA0
AC 3E C5 2E 9E C0 06 DD 2E 9B 0E EB 1D D9 9B 9E -- 017FB0
9B 9E A8 3E C5 2E 9E C0 06 DD 2E 9B 1D D9 9B 9E -- 017FC0
3E C5 2E 00 00 10 C8 57 56 CB 5E 5F C9 9B 1D D9 -- 017FD0
9B 9D F8 3E C5 2E 00 92 E9 03 74 00 3D 83 9D 4C -- 017FE0
9B 9D F4 3E C5 2E 1D D9 9B 9E 72 3E C5 2E 05 D9 -- 017FF0
C8 3E C5 2E 1D D9 9B 9E 7A 3E C5 2E 05 D9 01 FE -- 018000
9B 1C 74 00 3D 83 9C E6 3E C5 2E 00 14 05 C7 9E -- 018010
DD 2E 9B 1D D9 9B 9E B0 3E C5 2E 9E C0 06 DD 2E -- 018020
9E CC 3E C5 2E 1D D9 9B 9E B4 3E C5 2E 9E C0 06 -- 018030

9E D0 3E C5 2E F0 5E DD 9B EE D9 9B 00 15 05 C7 -- 018040
C5 2E 20 75 00 5C ED 94 9A F0 5E DC 9B 05 D9 9B -- 018050
C5 2E 1D D9 9B 9E D0 3E C5 2E 05 D9 9B 9E D4 3E -- 018060
C5 2E 1D D9 9B 9E D8 3E C5 2E 05 D9 9B 9E DC 3E -- 018070
C4 2E 1D D9 9B 9E E0 3E C5 2E 05 D9 9B 9E 72 3E -- 018080
2E 04 D8 26 9B 05 D9 9B 9E 72 3E C5 2E 9E E8 36 -- 018090
2E 05 D9 9B 9E 7A 3E C5 2E 1D D9 9B 9E E4 3E C5 -- 0180A0
7A 3E C5 2E 9E F4 36 C4 2E 1D D9 9B 9E EC 3E C5 -- 0180B0
1D D9 9B 9E F0 3E C5 2E 04 D8 26 9B 05 D9 9B 9E -- 0180C0
2E 50 F8 46 8D 16 6E 74 00 3D 83 9C E6 3E C5 2E -- 0180D0
D0 9A 01 F5 68 03 6A 50 05 8B 05 FF 9D 28 3E C5 -- 0180E0
9A F8 76 FF 0B 74 00 F8 7E 83 0A C4 83 00 64 40 -- 0180F0
C5 2E 05 8B 9D 28 3E C5 2E 02 C4 83 00 44 56 66 -- 018100
8B 9E F8 3E C5 2E 50 F8 46 8D 16 05 89 9D 20 3E -- 018110
C4 83 00 64 40 D0 9A 02 02 68 03 6A 50 05 FF 05 -- 018120
56 66 9A F8 76 FF 00 9A E9 03 75 00 F8 7E 83 0A -- 018130
3E C5 2E 00 44 57 40 9A 00 8C E9 02 C4 83 00 44 -- 018140
14 3E C5 2E 50 F8 46 8D 16 27 75 00 3D 83 9C E2 -- 018150
A6 36 FF 2E 02 6A 35 FF 9D 18 3E C5 2E 35 FF 9D -- 018160
C5 2E 0E C4 83 00 1C 79 02 9A 9D A4 36 FF 2E 9D -- 018170
6A 16 6A 50 F8 46 8D 16 4C 75 00 3D 83 9D 0C 3E -- 018180
9D 2C 3E C5 2E 0A C4 83 00 64 40 D0 9A 6F 6A 03 -- 018190
36 FF 2E 9D 2E 36 FF 2E 50 F8 46 8D 16 16 05 C6 -- 0181A0
0E C4 83 00 64 40 D0 9A 6E 6A 05 6A 01 6A 9D 2C -- 0181B0
64 40 D0 9A 01 F7 68 03 6A 01 6A 50 F8 46 8D 16 -- 0181C0
9D 2C 3E C5 2E 05 8B 9D 18 3E C5 2E 0A C4 83 00 -- 0181D0
2C 36 FF 2E 9D 2E 36 FF 2E 50 F8 46 8D 16 05 88 -- 0181E0
83 0E C4 83 00 64 40 D0 9A 6E 6A 05 6A 01 6A 9D -- 0181F0
83 00 44 56 66 9A F8 76 FF 0B 74 00 F8 7E 01 FE -- 018200
72 3E C5 2E 28 74 00 3D 83 9C E2 3E C5 2E 02 C4 -- 018210
7A 3E C5 2E 1D D9 9B 9E FC 3E C5 2E 05 D9 9B 9E -- 018220
1C 80 DF 9A 1D D9 9B 9F 00 3E C5 2E 05 D9 9B 9E -- 018230
9A 6F 6A 03 6A 14 6A 50 F8 46 8D 16 01 60 E9 00 -- 018240
74 00 3D 83 9D 0C 3E C5 2E 0A C4 83 00 64 40 D0 -- 018250
64 40 D0 9A 6F 6A 03 6A 35 6A 50 F8 46 8D 16 13 -- 018260
01 B8 18 74 00 3D 83 9C E6 3E C5 2E 0A C4 83 00 -- 018270
5C B4 C2 9A 35 FF 9D 14 3E C5 2E 50 FE 46 89 00 -- 018280
68 03 6A 02 6A 50 F8 46 8D 16 14 EB 04 C4 83 00 -- 018290
00 6A 00 6A 00 6A 0A C4 83 00 64 40 D0 9A 01 F7 -- 0182A0
9F 04 36 FF 2E 9F 06 36 FF 2E 00 6A 00 6A 00 6A -- 0182B0
FC 46 89 C0 2B 50 FA 46 89 00 01 B8 01 6A 01 6A -- 0182C0
36 FF 2E 00 6A 00 6A 18 C4 83 00 54 C9 5C 9A 50 -- 0182D0
68 36 FF 2E 9D 6A 36 FF 2E 9D A4 36 FF 2E 9D A6 -- 0182E0
8D 16 00 54 CF 43 9A 0C C4 83 00 54 CD C1 9A 9D -- 0182F0
36 FF 2E 9F 08 36 FF 2E 9F 0A 36 FF 2E 50 F8 46 -- 018300
64 40 D0 9A 03 EC 68 06 6A 9D A4 36 FF 2E 9D A6 -- 018310
```

```
C5 2E 76 7E 00 3D 83 9D 20 3E C5 2E 10 C4 83 00 -- 018320
C5 2E 1D D9 9B 9D 24 3E C5 2E 05 D9 9B 9E E0 3E -- 018330
C5 2E 1D D9 9B 9F 0C 3E C5 2E 05 D9 9B 9E EC 3E -- 018340
C5 2E 1D D9 9B 9F 10 3E C5 2E 05 D9 9B 9E E4 3E -- 018350
8D 16 1D D9 9B 9F 14 3E C5 2E 05 D9 9B 9E F0 3E -- 018360
68 04 6A 9D 24 36 FF 2E 9D 26 36 FF 2E 50 F8 46 -- 018370
0B 74 00 F8 7E 83 0C C4 83 00 64 40 D0 9A 01 F8 -- 018380
9D 20 3E C5 2E 02 C4 83 00 44 56 66 9A F8 76 FF -- 018390
70 9A 12 75 00 3D 83 9D 4C 3E C5 2E 00 00 05 C7 -- 0183A0
04 C4 83 00 64 13 07 9A 50 F8 46 8D 16 00 1C 76 -- 0183B0
05 C7 9D 4C 3E C5 2E 00 00 05 C7 9C E6 3E C5 2E -- 0183C0
1C 8F B2 9A 00 1C 9A EB 9A 00 54 2E A4 9A 00 00 -- 0183D0

EC 8B 55 57 56 CB 5E 5F C9 9B 00 1C 91 95 9A 00 -- 0183E0
8B 9F 18 3E C5 2E 00 00 08 C8 57 56 CB 5E 5F C9 -- 0183F0
80 9F 1C 3E C5 2E 18 FB 46 C6 FE 46 89 05 01 FE -- 018400
8D 16 F9 46 88 05 8B 9D 14 3E C5 2E 44 75 01 3D -- 018410
01 6A 00 6A 50 F9 46 8D 16 00 6A 00 6A 50 FC 46 -- 018420
C4 83 00 64 40 D0 9A 01 43 68 0A 6A 00 6A 04 6A -- 018430
83 00 64 59 DC 9A FC 76 FF 0D 74 00 FC 7E 83 18 -- 018440
6A 00 6A 50 FC 46 8D 16 10 FB 46 C6 72 EB 02 C4 -- 018450
00 64 3D BA 9A 01 2E 68 04 6A FE 76 FF 01 6A 0D -- 018460
FF 0D 6A 50 FB 46 8D 16 50 FC 46 8D 16 10 C4 83 -- 018470
16 10 C4 83 00 64 3D BA 9A 01 2F 68 04 6A FE 76 -- 018480
68 04 6A FE 76 FF 03 6A 0B 6A 00 6A 50 FC 46 8D -- 018490
16 50 FC 46 8D 16 10 C4 83 00 64 3D BA 9A 01 2E -- 0184A0
BA 9A 01 2F 68 04 6A FE 76 FF 0B 6A 50 FB 46 8D -- 0184B0
00 00 24 C8 57 56 CB 5E 5F C9 10 C4 83 00 64 3D -- 0184C0
50 E4 46 8D 16 EC 5E D9 9B F0 56 D9 9B EE D9 9B -- 0184D0
10 76 FF 08 C4 83 00 34 EE EE 9A 50 EC 46 8D 16 -- 0184E0
2E 04 6A 50 F4 46 8D 16 50 F8 46 8D 16 0E 76 FF -- 0184F0
00 64 3D BA 9A 01 90 68 06 6A 35 FF 9F 18 3E C5 -- 018500
35 FF 0E 7E C5 0D 74 00 3D 83 0E 7E C5 14 C4 83 -- 018510
26 DC 2E 9B F4 46 D9 9B 02 C4 83 00 44 56 66 9A -- 018520
D8 9B DC 4E DC 9B E8 46 D9 9B DC 5E DD 9B 9E C0 -- 018530
9E C0 26 DC 2E 9B F4 46 D9 9B FC 5E D9 9B FC 6E -- 018540
F8 6E D8 9B DC 4E DC 9B E4 46 D9 9B DC 5E DD 9B -- 018550
F4 4E D8 9B 05 D9 9B 9D F8 3E C5 2E F8 5E D9 9B -- 018560
F4 3E C5 2E 1D D9 9B 9D F8 3E C5 2E F8 46 D8 9B -- 018570
F4 3E C5 2E FC 46 D8 9B F4 4E D8 9B 05 D9 9B 9D -- 018580
0D D8 9B 9E B0 3E C5 2E F4 46 D9 9B 1D D9 9B 9D -- 018590
9B 0D D8 9B 9E B4 3E C5 2E F4 46 D9 9B 1D D9 9B -- 0185A0
04 C4 83 00 1C 78 3F 9A 0A 76 FF 0C 76 FF 1D D9 -- 0185B0
9B 9E B0 3E C5 2E EC 8B 55 57 56 CB 5E 5F C9 9B -- 0185C0
D9 9B 9E B4 3E C5 2E 3C 5D D9 9B 0A 7E C5 05 D9 -- 0185D0
0A 7E C5 9E B0 36 C4 2E 40 5D D9 9B 0A 7E C5 05 -- 0185E0
2E 72 5D D9 9B 0A 7E C5 0C D8 26 9B 5A 45 D9 9B -- 0185F0
D8 26 9B 5E 45 D9 9B 0A 7E C5 9E B4 36 C4 01 FE -- 018600
05 D9 9B 9D F8 3E C5 2E 76 5D D9 9B 0A 7E C5 0C -- 018610
C5 05 D9 9B 9D F4 3E C5 2E 6A 5D D9 9B 0A 7E C5 -- 018620
2E 00 14 00 86 85 C7 0A 7E C5 6E 5D D9 9B 0A 7E -- 018630
72 45 D9 9B 0A 7E C5 3C 74 00 3D 83 9C E2 3E C5 -- 018640
2E 76 45 D9 9B 0A 7E C5 1D D9 9B 9F 20 3E C5 2E -- 018650
C5 2E 6A 45 D9 9B 0A 7E C5 1D D9 9B 9F 24 3E C5 -- 018660
3E C5 2E 6E 45 D9 9B 0A 7E C5 1D D9 9B 9E FC 3E -- 018670
00 00 02 C8 57 56 CB 5E 5F C9 9B 1D D9 9B 9F 00 -- 018680
14 76 FF 16 76 FF 1D 74 00 3D 83 9D 54 3E C5 2E -- 018690
9A 01 F8 68 04 6A 9E 52 36 FF 2E 9E 54 36 FF 2E -- 0186A0
C5 2E 6A 45 D9 9B 0A 7E C5 0C C4 83 00 64 40 D0 -- 0186B0
6A 45 D9 9B 0A 7E C5 0A 76 C4 1D D9 9B 9E E0 3E -- 0186C0
```

116

```
0A 7E C5 1D D9 9B 9E E4 3E C5 2E 72 44 D8 26 9B -- 0186D0
C5 0A 76 C4 1D D9 9B 9E EC 3E C5 2E 6E 45 D9 9B -- 0186E0
9E F0 3E C5 2E 76 44 D8 26 9B 6E 45 D9 9B 0A 7E -- 0186F0
F6 68 03 6A 0E 76 FF 14 76 FF 16 76 FF 1D D9 9B -- 018700
74 00 3D 83 14 7E C5 0A C4 83 00 64 40 D0 9A 01 -- 018710
76 FF 02 C4 83 00 44 56 66 9A 35 FF 14 7E C5 0D -- 018720
64 40 D0 9A 01 F5 68 03 6A 0E 76 FF 14 76 FF 16 -- 018730
FF 14 7E C5 0D 74 00 3D 83 14 7E C5 0A C4 83 00 -- 018740
20 3E C5 2E 0E 46 8B 02 C4 83 00 44 56 66 9A 35 -- 018750
35 FF 9E F8 3E C5 2E 14 76 FF 16 76 FF 05 89 9D -- 018760
14 7E C5 0A C4 83 00 64 40 D0 9A 02 02 68 03 6A -- 018770

83 00 44 56 66 9A 35 FF 14 7E C5 0D 74 00 3D 83 -- 018780
FF 16 76 FF 05 88 9D 2C 3E C5 2E 10 46 8B 02 C4 -- 018790
05 6A 01 6A 9D 2C 36 FF 2E 9D 2E 36 FF 2E 14 76 -- 0187A0
00 3D 83 14 7E C5 0E C4 83 00 64 40 D0 9A 6E 6A -- 0187B0
B8 02 C4 83 00 44 56 66 9A 35 FF 14 7E C5 0D 74 -- 0187C0
C4 83 00 5C B4 C2 9A 12 76 FF 50 FE 46 89 00 01 -- 0187D0
9E E0 3E C5 2E 7B 7E 00 3D 83 9D 20 3E C5 2E 04 -- 0187E0
9E EC 3E C5 2E 1D D9 9B 9D 24 3E C5 2E 05 D9 9B -- 0187F0
3E C5 2E 1D D9 9B 9F 0C 3E C5 2E 05 D9 9B 01 FE -- 018800
3E C5 2E 1D D9 9B 9F 10 3E C5 2E 05 D9 9B 9E E4 -- 018810
16 76 FF 1D D9 9B 9F 14 3E C5 2E 05 D9 9B 9E F0 -- 018820
68 04 6A 9D 24 36 FF 2E 9D 26 36 FF 2E 14 76 FF -- 018830
00 3D 83 14 7E C5 0C C4 83 00 64 40 D0 9A 01 F8 -- 018840
2E 02 C4 83 00 44 56 66 9A 35 FF 14 7E C5 0D 74 -- 018850
00 3D 83 9D 54 3E C5 2E 00 00 05 C7 9D 20 3E C5 -- 018860
6A 35 FF 9D 54 3E C5 2E 14 76 FF 16 76 FF 1A 74 -- 018870
5E 5F C9 9B 0A C4 83 00 64 40 D0 9A 01 FA 68 03 -- 018880
3E C5 2E 05 8B 9E CC 3E C5 2E EC 8B 55 57 56 CB -- 018890
9F 2C 3E C5 2E 05 8B 9D 84 3E C5 2E 05 89 9F 28 -- 0188A0
E2 3E C5 2E 00 00 02 C8 57 56 CB 5E 5F C9 05 89 -- 0188B0
C5 2E 00 01 05 C7 9D 94 3E C5 2E 00 00 05 C7 9C -- 0188C0
46 FF 03 EB 00 00 FE 46 C7 00 02 05 C7 9D 14 3E -- 0188D0
3E 03 2E E7 D1 FE 7E 8B 15 74 01 00 FE 7E 81 FE -- 0188E0
3E C5 2E E1 EB 00 01 05 C7 9D 8A 1E 8E 2E 9D 88 -- 0188F0
9D 8A 1E 8E 2E 9D 88 3E 03 2E E7 D1 3D 8B 9D 14 -- 018900
5E 3A 9A 00 02 05 C7 9D C0 3E C5 2E 00 02 05 C7 -- 018910
FF 2E 57 56 00 4C 02 61 9A 00 4C 00 BC 9A 00 44 -- 018920
36 FF 2E 9D 8A 36 FF 2E 9D E4 36 FF 2E 9D E6 36 -- 018930
C0 3E C5 2E 5E 5F 00 5C FF 6A 9A 01 00 68 9D 88 -- 018940
8B 9F 28 3E C5 2E 05 89 9D E8 3E C5 2E 05 8B 9D -- 018950
2E 05 8B 9F 2C 3E C5 2E 05 89 9E CC 3E C5 2E 05 -- 018960
00 00 22 C8 57 56 CB 5E 5F C9 05 89 9D 84 3E C5 -- 018970
1B 7D 09 FE 7E 83 FE 46 FF 03 EB 00 00 FE 46 C7 -- 018980
9F 32 1E 8E 2E 9F 30 3E 03 2E 02 E7 C1 FE 7E 8B -- 018990
50 E0 46 8D 16 DC EB 1D D9 9B 9F 34 06 DD 2E 9B -- 0189A0
FF 2E 50 00 14 05 9F 30 06 8B 2E 9F 32 36 FF 2E -- 0189B0
0C C4 83 00 1C 7F 5C 9A 9F 30 36 FF 2E 9F 32 36 -- 0189C0
3E C5 2E 01 AC E9 03 75 00 3D 83 9D 0C 3E C5 2E -- 0189D0
1C 3E C5 2E 05 8B 9D 94 3E C5 2E 00 05 C6 9D 1C -- 0189E0
C5 2E 00 02 E2 46 C7 00 01 E4 46 C7 01 45 88 9D -- 0189F0
2E 50 E0 46 8D 16 E9 46 88 05 8B 9D 10 3E 01 FE -- 018A00
76 FF 50 E9 46 8D 16 9D 1C 36 FF 2E 9D 1E 36 FF -- 018A10
40 D0 9A 01 43 68 0A 6A 00 6A 02 6A E4 76 FF E2 -- 018A20
DC 9A E0 76 FF 0E 74 00 E0 7E 83 18 C4 83 00 64 -- 018A30
05 8B 9D 14 3E C5 2E 02 9A E9 02 C4 83 00 64 59 -- 018A40
01 E2 46 C7 00 01 E4 46 C7 05 88 9D 1C 3E C5 2E -- 018A50
2E 9D 1E 36 FF 2E 50 E0 46 8D 16 00 E9 46 C6 00 -- 018A60
6A E4 76 FF E2 76 FF 50 E9 46 8D 16 9D 1C 36 FF -- 018A70
```

117

```
18 C4 83 00 64 40 D0 9A 01 43 68 0A 6A 00 6A 03 -- 018A80
C4 83 00 64 59 DC 9A E0 76 FF 0E 74 00 E0 7E 83 -- 018A90
9D 1C 3E C5 2E 05 8B 9D 14 3E C5 2E 02 3F E9 02 -- 018AA0
10 3E C5 2E 00 01 E2 46 C7 00 01 E4 46 C7 05 88 -- 018AB0
9D 1E 36 FF 2E 50 E0 46 8D 16 E9 46 88 05 8B 9D -- 018AC0
E4 76 FF E2 76 FF 50 E9 46 8D 16 9D 1C 36 FF 2E -- 018AD0
C4 83 00 64 40 D0 9A 01 43 68 0A 6A 00 6A 04 6A -- 018AE0
83 00 64 59 DC 9A E0 76 FF 0E 74 00 E0 7E 83 18 -- 018AF0
C5 2E 00 01 05 C7 9F 3C 3E C5 2E 01 DE E9 02 C4 -- 018B00
C5 2E E4 2A 05 88 9F 44 3E C5 2E 05 8B 9D 94 3E -- 018B10

3E C5 2E 02 05 C6 9F 48 3E C5 2E 05 88 9F 40 3E -- 018B20
00 01 E4 46 C7 05 88 9D 1C 3E C5 2E 05 8B 9D 94 -- 018B30
FF 2E 50 E0 46 8D 16 00 E9 46 C6 00 01 E2 46 C7 -- 018B40
E2 76 FF 50 E9 46 8D 16 9D 1C 36 FF 2E 9D 1E 36 -- 018B50
64 40 D0 9A 01 43 68 0A 6A 00 6A 00 6A E4 76 FF -- 018B60
E0 76 FF 01 66 E9 03 75 00 E0 7E 83 18 C4 83 00 -- 018B70
00 02 E4 46 C7 01 58 E9 02 C4 83 00 64 59 DC 9A -- 018B80
2E E6 46 88 05 8B 9D 10 3E C5 2E 00 10 E2 46 C7 -- 018B90
46 88 04 0B 26 05 8B 9D 94 3E C5 2E 9D 10 36 C4 -- 018BA0
9D 1C 36 FF 2E 9D 1E 36 FF 2E 50 E0 46 8D 16 E7 -- 018BB0
6A 00 6A 02 6A E4 76 FF E2 76 FF 50 E6 46 8D 16 -- 018BC0
00 E0 7E 83 18 C4 83 00 64 40 D0 9A 01 43 68 0A -- 018BD0
00 F3 E9 02 C4 83 00 64 59 DC 9A E0 76 FF 0E 74 -- 018BE0
16 00 01 E4 46 C7 E9 46 88 05 8B 9D 14 3E C5 2E -- 018BF0
9D 1C 36 FF 2E 9D 1E 36 FF 2E 50 E0 46 8D 01 FE -- 018C00
6A 00 6A 03 6A E4 76 FF E2 76 FF 50 E9 46 8D 16 -- 018C10
00 E0 7E 83 18 C4 83 00 64 40 D0 9A 01 43 68 0A -- 018C20
00 A5 E9 02 C4 83 00 64 59 DC 9A E0 76 FF 0E 74 -- 018C30
89 04 0B 26 05 8B 9D 10 3E C5 2E 9D 14 36 C4 2E -- 018C40
36 FF 2E 50 E0 46 8D 16 E9 46 88 DE 46 8B DE 46 -- 018C50
FF E2 76 FF 50 E9 46 8D 16 9D 1C 36 FF 2E 9D 1E -- 018C60
00 64 40 D0 9A 01 43 68 0A 6A 00 6A 04 6A E4 76 -- 018C70
64 59 DC 9A E0 76 FF 0D 74 00 E0 7E 83 18 C4 83 -- 018C80
2E 00 E6 46 C6 00 02 E4 46 C7 4F EB 02 C4 83 00 -- 018C90
FF 2E 50 E0 46 8D 16 E7 46 88 05 8B 9D 94 3E C5 -- 018CA0
E2 76 FF 50 E6 46 8D 16 9D 1C 36 FF 2E 9D 1E 36 -- 018CB0
64 40 D0 9A 01 43 68 0A 6A 00 6A 00 6A E4 76 FF -- 018CC0
59 DC 9A E0 76 FF 0B 74 00 E0 7E 83 18 C4 83 00 -- 018CD0
00 00 2C C8 57 56 CB 5E 5F C9 9B 02 C4 83 00 64 -- 018CE0
FF 03 EB 00 00 FE 46 C7 02 EB 46 C6 00 ED 46 C6 -- 018CF0
E0 C1 FE 46 8B 01 5D E9 03 75 04 FE 7E 83 FE 46 -- 018D00
56 89 EE 46 89 9F 4E 16 8B 2E 9F 4C 06 03 2E 09 -- 018D10
55 8B 05 03 09 E0 C1 FE 46 8B 9D B8 3E C5 2E F0 -- 018D20
C1 FE 46 8B 9D BC 3E C5 2E E4 56 89 E2 46 89 02 -- 018D30
FE 7E 8B E0 56 89 DE 46 89 02 55 8B 05 03 09 E0 -- 018D40
F6 5E D9 9B 05 D9 9B 0C 5E 8E 0A 7E 03 02 E7 C1 -- 018D50
9B 05 D9 9B 10 5E 8E 0E 7E 03 02 E7 C1 FE 7E 8B -- 018D60
66 D8 9B F6 66 D8 9B 9E C0 06 DD 2E 9B F2 5E D9 -- 018D70
5C ED F9 9A 00 5C ED 99 9A 9F 50 0E DC 2E 9B F2 -- 018D80
46 FF 03 EB 00 00 FC 46 C7 FA 46 89 08 C4 83 00 -- 018D90
E7 C1 FC 7E 8B 00 8C E9 03 75 01 00 FC 7E 81 FC -- 018DA0
46 D9 9B E0 5E 8E DE 7E 03 E7 D1 00 F0 E7 81 04 -- 018DB0
D1 00 F0 E7 81 FC 7E 8B D4 5E DD 9B 0D DE 9B F2 -- 018DC0
DC 9B 0D DE 9B F6 46 D9 9B E4 5E 8E E2 7E 03 E7 -- 018DD0
00 5C ED F9 9A 00 5C ED 99 9A FA 46 DE 9B D4 46 -- 018DE0
03 E7 D1 FC 7E 8B 11 7D C0 0B DC 46 89 08 C4 83 -- 018DF0
DC 7E 81 93 EB 00 00 05 C7 F0 5E 8E EE 7E 01 FE -- 018E00
C7 F0 5E 8E EE 7E 03 E7 D1 FC 7E 8B 12 7E 00 FF -- 018E10
5E 8E EE 7E 03 E7 D1 FC 7E 8B FF 7A E9 00 FF 05 -- 018E20
```

```
FF 12 76 FF 14 76 FF FF 67 E9 05 89 DC 46 8B F0 -- 018E30
46 8A FE 76 FF EE 76 FF F0 76 FF E6 76 FF E8 76 -- 018E40
9A 01 45 68 09 6A 50 E4 2A ED 46 8A 50 E4 2A EB -- 018E50
56 CB 5E 5F C9 9B FE 97 E9 16 C4 83 00 64 40 D0 -- 018E60
00 6A 00 6A 00 6A 00 00 FE 46 C7 00 00 08 C8 57 -- 018E70
9F 58 36 FF 2E 9F 5A 36 FF 2E 00 6A 00 6A 00 6A -- 018E80
46 89 00 01 B8 50 FC 46 89 00 01 B8 01 6A 01 6A -- 018E90
C7 9F 5C 3E C5 2E 18 C4 83 00 54 C9 5C 9A 50 FA -- 018EA0
D0 9A 6F 6A 03 6A 14 6A 50 FE 46 8D 16 00 00 05 -- 018EB0

13 74 00 3D 83 9D 0C 3E C5 2E 0A C4 83 00 64 40 -- 018EC0
00 64 40 D0 9A 6F 6A 03 6A 35 6A 50 FE 46 8D 16 -- 018ED0
00 3D 83 9C E2 3E C5 2E 00 44 57 40 9A 0A C4 83 -- 018EE0
D2 36 FF 2E 50 F8 46 89 C0 2B 00 6A 00 6A 30 74 -- 018EF0
9F 60 36 FF 2E 9F 62 36 FF 2E 9D D0 36 FF 2E 9D -- 018F00
83 00 54 CB 7F 9A 9D CC 36 FF 2E 9D CE 36 FF 2E -- 018F10
20 3E C5 2E 58 74 00 3D 83 9C E2 3E C5 2E 12 C4 -- 018F20
36 FF 2E 50 FE 46 8D 16 36 75 00 02 3D 05 8B 9D -- 018F30
64 40 D0 9A 01 F8 68 04 6A 9D 24 36 FF 2E 9D 26 -- 018F40
56 66 9A FE 76 FF 0B 74 00 FE 7E 83 0C C4 83 00 -- 018F50
8D 16 00 00 05 C7 9D 20 3E C5 2E 02 C4 83 00 44 -- 018F60
83 00 64 40 D0 9A 01 F6 68 03 6A 02 6A 50 FE 46 -- 018F70
01 F7 68 03 6A 02 6A 50 FE 46 8D 16 14 EB 0A C4 -- 018F80
A6 36 FF 2E 00 6A 00 6A 0A C4 83 00 64 40 D0 9A -- 018F90
9D 68 36 FF 2E 9D 6A 36 FF 2E 9D A4 36 FF 2E 9D -- 018FA0
46 8D 16 00 54 CF 43 9A 0C C4 83 00 54 CD C1 9A -- 018FB0
A6 36 FF 2E 9F 08 36 FF 2E 9F 0A 36 FF 2E 50 FE -- 018FC0
00 64 40 D0 9A 03 EC 68 06 6A 9D A4 36 FF 2E 9D -- 018FD0
2E A4 9A 00 54 2E 8A 9A 00 54 C8 1C 9A 10 C4 83 -- 018FE0
00 08 C8 57 56 CB 5E 5F C9 00 54 29 A2 9A 00 54 -- 018FF0
00 6A 00 6A 00 6A 00 6A 00 00 FE 46 C7 00 01 FE -- 019000
01 6A 9F 58 36 FF 2E 9F 5A 36 FF 2E 00 6A 00 6A -- 019010
50 FA 46 89 00 01 B8 50 FC 46 89 00 02 B8 01 6A -- 019020
00 05 C7 9F 5C 3E C5 2E 18 C4 83 00 54 C9 5C 9A -- 019030
64 40 D0 9A 6F 6A 03 6A 16 6A 50 FE 46 8D 16 00 -- 019040
9A 6F 6A 03 6A 13 6A 50 FE 46 8D 16 0A C4 83 00 -- 019050
74 00 3D 83 9D 0C 3E C5 2E 0A C4 83 00 64 40 D0 -- 019060
64 40 D0 9A 6F 6A 03 6A 35 6A 50 FE 46 8D 16 13 -- 019070
01 6A 50 FE 46 8D 16 00 44 57 40 9A 0A C4 83 00 -- 019080
6A 00 6A 0A C4 83 00 64 40 D0 9A 01 F7 68 03 6A -- 019090
9D 32 36 FF 2E 9F 64 36 FF 2E 9F 66 36 FF 2E 00 -- 0190A0
46 8D 16 0C C4 83 00 54 CD C1 9A 9D 30 36 FF 2E -- 0190B0
66 36 FF 2E 9F 68 36 FF 2E 9F 6A 36 FF 2E 50 FE -- 0190C0
00 64 40 D0 9A 03 EC 68 06 6A 9F 64 36 FF 2E 9F -- 0190D0
2E A4 9A 00 54 2E 8A 9A 00 54 C8 1C 9A 10 C4 83 -- 0190E0
75 00 3D 83 9C FA 3E C5 2E 00 54 29 A2 9A 00 54 -- 0190F0
00 6A 30 74 00 3D 83 9C E2 3E C5 2E 01 06 E9 03 -- 019100
36 FF 2E 9D D2 36 FF 2E 50 F8 46 89 C0 2B 00 6A -- 019110
CE 36 FF 2E 9F 60 36 FF 2E 9F 62 36 FF 2E 9D D0 -- 019120
C5 2E 12 C4 83 00 54 CB 7F 9A 9D CC 36 FF 2E 9D -- 019130
3D 05 8B 9D 20 3E C5 2E 58 74 00 3D 83 9C E2 3E -- 019140
FF 2E 9D 26 36 FF 2E 50 FE 46 8D 16 36 75 00 02 -- 019150
0C C4 83 00 64 40 D0 9A 01 F8 68 04 6A 9D 24 36 -- 019160
C4 83 00 44 56 66 9A FE 76 FF 0B 74 00 FE 7E 83 -- 019170
6A 50 FE 46 8D 16 00 00 05 C7 9D 20 3E C5 2E 02 -- 019180
14 EB 0A C4 83 00 64 40 D0 9A 01 F6 68 03 6A 02 -- 019190
64 40 D0 9A 01 F7 68 03 6A 02 6A 50 FE 46 8D 16 -- 0191A0
8D 16 2C 74 00 3D 83 9D 54 3E C5 2E 0A C4 83 00 -- 0191B0
C4 83 00 64 40 D0 9A 6F 6A 03 6A 03 6A 50 FE 46 -- 0191C0
68 03 6A 35 FF 9D 54 3E C5 2E 50 FE 46 8D 16 0A -- 0191D0
```

```
FF  2E  00  6A  00  6A  0A  C4  83  00  64  40  D0  9A  01  F7  --  0191E0
36  FF  2E  9D  6A  36  FF  2E  9D  A4  36  FF  2E  9D  A6  36  --  0191F0
54  CF  43  9A  0C  C4  83  00  54  CD  C1  9A  9D  68  01  FE  --  019200
50  FE  46  8D  16  26  74  00  3D  83  9C  FA  3E  C5  2E  00  --  019210
2E  9D  A6  36  FF  2E  9F  08  36  FF  2E  9F  0A  36  FF  2E  --  019220
C4  83  00  64  40  D0  9A  03  EC  68  06  6A  9D  A4  36  FF  --  019230
00  54  2E  A4  9A  00  54  2E  8A  9A  00  54  C8  1C  9A  10  --  019240
C7  00  01  F8  46  C7  00  02  26  C8  57  56  CB  5E  5F  C9  --  019250

46  C7  00  08  FE  46  C7  00  04  FC  46  C7  00  02  FA  46  --  019260
EA  46  C7  00  01  EC  46  C7  01  00  F4  46  C7  02  00  F6  --  019270
74  00  07  7D  80  0C  7E  C5  00  00  FD  E2  86  C7  00  02  --  019280
00  6A  00  6A  00  6A  00  6A  11  05  05  C7  18  7E  C5  1F  --  019290
01  DF  E9  0A  C4  83  00  64  28  52  9A  35  FF  18  7E  C5  --  0192A0
11  06  05  C7  18  7E  C5  1F  75  00  01  7D  80  0C  7E  C5  --  0192B0
28  52  9A  35  FF  18  7E  C5  00  6A  00  6A  00  6A  00  6A  --  0192C0
E4  2A  01  45  8A  0C  7E  C5  01  B7  E9  0A  C4  83  00  64  --  0192D0
89  02  C4  83  00  64  4E  56  9A  F6  76  FF  FD  E0  86  89  --  0192E0
18  7E  C5  1F  75  F0  46  0B  F2  46  8B  F2  56  89  F0  46  --  0192F0
FF  18  7E  C5  00  6A  00  6A  00  6A  00  6A  11  07  05  C7  --  019300
FD  E4  86  C7  01  73  E9  0A  C4  83  00  64  28  52  9A  35  --  019310
E9  03  7E  03  FD  E4  BE  83  FD  E4  86  FF  04  EB  00  00  --  019320
D1  FD  E4  BE  8B  E9  74  00  02  7D  83  0C  7E  C5  01  4F  --  019330
76  FF  1A  76  FF  D9  74  00  F8  7D  83  1F  16  FD  03  E7  --  019340
76  FF  12  76  FF  FD  E4  B6  FF  F0  76  FF  F2  76  FF  18  --  019350
74  00  3D  83  18  7E  C5  0E  C4  83  00  54  FC  8B  9A  10  --  019360
6A  04  C4  83  00  64  4E  E3  9A  F0  76  FF  F2  76  FF  26  --  019370
64  28  52  9A  35  FF  18  7E  C5  00  6A  00  6A  00  6A  00  --  019380
E0  C1  FD  E4  86  8B  F4  76  FF  00  F8  E9  0A  C4  83  00  --  019390
FF  F0  76  FF  F2  76  FF  50  52  16  56  8B  14  46  03  09  --  0193A0
EE  46  89  0E  C4  83  00  5C  F6  28  9A  EC  76  FF  EA  76  --  0193B0
E6  86  89  16  56  8B  14  46  03  09  E0  C1  FD  E4  86  8B  --  0193C0
00  FD  DE  86  C7  36  74  00  0A  7E  83  FD  E8  96  89  FD  --  0193D0
BE  8B  5A  74  10  FD  DE  BE  83  FD  DE  86  FF  04  EB  00  --  0193E0
8B  FD  E8  9E  8E  FD  E6  BE  03  E7  D1  04  E7  C1  FD  DE  --  0193F0
EA  85  89  1F  16  FD  03  E7  D1  FD  DE  BE  8B  05  01  FE  --  019400
81  FD  DE  86  FF  04  EB  00  00  FD  DE  86  C7  D2  EB  FD  --  019410
E6  BE  03  E7  D1  FD  DE  BE  8B  23  74  01  00  FD  DE  BE  --  019420
E7  D1  FD  DE  BE  8B  00  F0  25  05  8B  FD  E8  9E  8E  FD  --  019430
18  76  FF  1A  76  FF  D1  EB  FD  EA  85  89  1F  16  FD  03  --  019440
B6  FF  50  FD  EA  86  8D  16  FD  DA  B6  FF  FD  DC  B6  FF  --  019450
D0  9A  01  45  68  09  6A  FD  E2  B6  FF  0A  76  FF  FD  E4  --  019460
A5  E9  03  75  00  3D  83  18  7E  C5  16  C4  83  00  64  40  --  019470
C4  83  00  64  4E  E3  9A  F0  76  FF  F2  76  FF  0E  EB  FE  --  019480
C6  01  FF  46  C6  00  00  08  C8  57  56  CB  5E  5F  C9  04  --  019490
3E  C5  2E  F8  46  FF  03  EB  00  01  F8  46  C7  00  FE  46  --  0194A0
D1  F8  7E  8B  00  99  E9  03  7E  05  3B  F8  46  8B  9D  C0  --  0194B0
05  89  00  01  B8  9D  8A  1E  8E  2E  9D  88  3E  03  2E  E7  --  0194C0
46  C6  80  FB  46  C6  FA  46  88  F8  46  8B  40  74  C0  0B  --  0194D0
FA  46  8D  16  0A  76  FF  0C  76  FF  80  FD  46  C6  80  FC  --  0194E0
68  06  6A  50  E4  2A  FF  46  8A  50  E4  2A  FE  46  8A  50  --  0194F0
00  3D  83  0A  7E  C5  10  C4  83  00  64  40  D0  9A  01  32  --  019500
46  C6  00  FB  46  C6  FA  46  88  F8  46  8B  41  EB  98  74  --  019510
FA  46  8D  16  0A  76  FF  0C  76  FF  00  FD  46  C6  00  FC  --  019520
68  06  6A  50  E4  2A  FF  46  8A  50  E4  2A  FE  46  8A  50  --  019530
00  3D  83  0A  7E  C5  10  C4  83  00  64  40  D0  9A  01  32  --  019540
66  6A  EC  8B  55  57  56  CB  5E  5F  C9  FF  55  E9  03  75  --  019550
04  6A  0A  6A  03  6A  9D  68  36  FF  2E  9D  6A  36  FF  2E  --  019560
83  00  5C  A5  FF  9A  9F  6C  36  FF  2E  9F  6E  36  FF  2E  --  019570
36  FF  2E  66  6A  EC  8B  55  57  56  CB  5E  5F  C9  10  C4  --  019580
```

```
36 FF 2E 04 6A 0A 6A 03 6A 9D 30 36 FF 2E 9D 32 -- 019590
C9 10 C4 83 00 5C A5 FF 9A 9F 70 36 FF 2E 9F 72 -- 0195A0
83 00 54 23 E4 9A 03 6A EC 8B 55 57 56 CB 5E 5F -- 0195B0
54 29 A2 9A 02 C4 83 00 54 23 E4 9A 05 6A 02 C4 -- 0195C0
56 CB 5E 5F C9 00 54 2E A4 9A 00 54 2E 8A 9A 00 -- 0195D0
9B 9E 7A 3E C5 2E 9E 92 36 C4 2E 00 00 20 C8 57 -- 0195E0
3E C5 2E 0A 73 00 5C ED 94 9A 1C D8 26 9B 05 D9 -- 0195F0

D9 9B 9E 92 3E C5 2E 08 EB 05 D9 9B 9E 7A 01 FE -- 019600
9B 9E 72 3E C5 2E 9E 8E 36 C4 2E FC 5E D9 9B 05 -- 019610
3E C5 2E 0A 73 00 5C ED 94 9A 1C D8 26 9B 05 D9 -- 019620
9B 05 D9 9B 9E 8E 3E C5 2E 08 EB 05 D9 9B 9E 72 -- 019630
05 D9 9B 9E 7A 3E C5 2E 9E 8A 36 C4 2E F8 5E D9 -- 019640
3E C5 2E 9F 74 36 C4 2E EC 5E D9 9B 04 D8 26 9B -- 019650
46 D9 9B E8 5E D9 9B 04 D8 26 9B 05 D9 9B 9E 92 -- 019660
EC 46 D9 9B 06 76 00 5C ED 94 9A E8 5E D8 9B EC -- 019670
2E 9E 82 36 C4 2E F4 5E D9 9B E8 46 D9 9B 04 EB -- 019680
2E E4 5E D9 9B 04 D8 26 9B 05 D9 9B 9E 72 3E C5 -- 019690
04 D8 26 9B 05 D9 9B 9E 8E 3E C5 2E 9F 78 36 C4 -- 0196A0
5C ED 94 9A E0 5E D8 9B E4 46 D9 9B E0 5E D9 9B -- 0196B0
5E D9 9B E0 46 D9 9B 04 EB E4 46 D9 9B 06 76 00 -- 0196C0
5C ED 94 9A F8 5E D8 9B 10 45 D9 9B 0A 7E C5 F0 -- 0196D0
7E C5 10 5D D9 9B 0A 7E C5 F8 46 D9 9B 0B 73 00 -- 0196E0
0B 73 00 5C ED 94 9A FC 5E D8 9B 14 45 D9 9B 0A -- 0196F0
D9 9B 0A 7E C5 14 5D D9 9B 0A 7E C5 FC 46 D9 9B -- 019700
46 D9 9B 0B 76 00 5C ED 94 9A F0 5E D8 9B 10 45 -- 019710
9B 14 45 D9 9B 0A 7E C5 10 5D D9 9B 0A 7E C5 F0 -- 019720
7E C5 F4 46 D9 9B 0B 76 00 5C ED 94 9A F4 5E D8 -- 019730
00 00 02 C8 57 56 CB 5E 5F C9 9B 14 5D D9 9B 0A -- 019740
16 2E 74 00 3D 83 9D 54 3E C5 2E 00 1C 7B 2C 9A -- 019750
04 6A 9E 52 36 FF 2E 9E 54 36 FF 2E 50 FE 46 8D -- 019760
9D 20 3E C5 2E 0C C4 83 00 64 40 D0 9A 01 F8 68 -- 019770
3E C5 2E 0D FF 9D 28 3E C5 2E 07 EB 00 00 05 C7 -- 019780
C5 2E 50 FE 46 8D 16 1B 7C 00 01 3D 05 8B 9D 28 -- 019790
83 00 64 40 D0 9A 01 F6 68 03 6A 35 FF 9D 28 3E -- 0197A0
6E 9A 05 74 00 3D 83 9D 5C 3E C5 2E D2 EB 0A C4 -- 0197B0
D0 9A 6F 6A 03 6A 16 6A 50 FE 46 8D 16 00 44 E1 -- 0197C0
13 74 00 3D 83 9D 0C 3E C5 2E 0A C4 83 00 64 40 -- 0197D0
00 64 40 D0 9A 6F 6A 03 6A 35 6A 50 FE 46 8D 16 -- 0197E0
D0 9A 6F 6A 03 6A 13 6A 50 FE 46 8D 16 0A C4 83 -- 0197F0
6A 03 6A 50 FE 46 8D 16 0A C4 83 00 64 40 01 FE -- 019800
00 64 0E 74 9A 0A C4 83 00 64 40 D0 9A 6F 6A 03 -- 019810
C8 57 56 CB 5E 5F C9 00 00 05 C7 9C DE 3E C5 2E -- 019820
02 05 C7 9F 7C 3E C5 2E 00 54 72 B4 9A 00 00 04 -- 019830
7D 04 FE 7E 83 FE 46 FF 03 EB 00 00 FE 46 C7 00 -- 019840
9D 66 1E 8E 2E 9D 64 3E 03 2E E7 D1 FE 7E 8B 1D -- 019850
C5 2E 00 03 05 C7 9F 7C 3E C5 2E E3 74 00 3D 83 -- 019860
C7 9F 7C 3E C5 2E 36 75 00 03 3D 05 8B 9F 7C 3E -- 019870
FE 7E 83 FE 46 FF 03 EB 00 05 FE 46 C7 00 01 05 -- 019880
1E 8E 2E 9D 64 3E 03 2E E7 D1 FE 7E 8B 1D 7D 09 -- 019890
00 03 05 C7 9F 7C 3E C5 2E E3 74 00 3D 83 9D 66 -- 0198A0
7B 7D 04 FE 7E 83 FE 46 FF 03 EB 00 00 FE 46 C7 -- 0198B0
8B 9D 66 1E 8E 2E 9D 64 3E 03 2E E7 D1 FE 7E 8B -- 0198C0
9F 82 1E 8E 2E 9F 80 3E 03 2E E7 D1 FE 7E 8B 05 -- 0198D0
2E 9D 64 3E 03 2E E7 D1 05 C7 83 FE 7E 8B 05 89 -- 0198E0
9F 84 3E 03 2E E7 D1 FE 7E 8B 05 8B 9D 66 1E 8E -- 0198F0
3E 03 2E 02 E7 C1 FE 7E 8B 05 89 9F 86 1E 8E 2E -- 019900
9A 00 5C ED 99 9A 05 D9 9B 9D 00 1E 8E 2E 9C FE -- 019910
88 3E 03 2E E7 D1 FE 7E 8B 08 C4 83 00 5C ED F9 -- 019920
9D 54 3E C5 2E FF 7C E9 05 89 9F 8A 1E 8E 2E 9F -- 019930
```

121

```
8C 36 FF 2E 9F 8E 36 FF 2E 57 56 21 74 00 3D 83 -- 019940
FE EC 9A 10 6A 9E 6E 36 FF 2E 9E 70 36 FF 2E 9F -- 019950
C5 2E 05 D9 9B 9E 8E 3E C5 2E 55 EB 5E 5F 00 5C -- 019960
C5 2E 05 D9 9B 9E 92 3E C5 2E 1D D9 9B 9F 8C 3E -- 019970
8E 3E C5 2E 9E 96 36 C4 2E 08 5D D9 9B 9F 8C 3E -- 019980
5D D9 9B 9F 8C 3E C5 2E 04 D8 26 9B 05 D9 9B 9E -- 019990

26 9B 05 D9 9B 9E 92 3E C5 2E 9E 9A 36 C4 2E 04 -- 0199A0
9E 8A 3E C5 2E 0C 5D D9 9B 9F 8C 3E C5 2E 04 D8 -- 0199B0
9E 82 3E C5 2E 1D D9 9B 9F 90 3E C5 2E 05 D9 9B -- 0199C0
9E 92 3E C5 2E 1D D9 9B 9F 94 3E C5 2E 05 D9 9B -- 0199D0
9E 8E 3E C5 2E 1D D9 9B 9F 98 3E C5 2E 05 D9 9B -- 0199E0
9E 7A 3E C5 2E 1D D9 9B 9F 9C 3E C5 2E 05 D9 9B -- 0199F0
3E C5 2E 1D D9 9B 9F A0 3E C5 2E 05 D9 9B 01 FE -- 019A00
3E C5 2E 1D D9 9B 9F A4 3E C5 2E 05 D9 9B 9E 72 -- 019A10
00 01 3D 05 8B 9F AC 3E C5 2E 00 01 05 C7 9F A8 -- 019A20
FF 2E 00 6A 00 6A 00 6A 00 6A 00 6A 00 6A 3A 74 -- 019A30
10 C4 83 00 5C A2 86 9A 9F B0 36 FF 2E 9F B2 36 -- 019A40
6A 00 6A 00 6A 00 6A 13 74 00 FC 7E 83 FC 46 89 -- 019A50
FF 2E 57 56 0A C4 83 00 64 28 52 9A FC 76 FF 00 -- 019A60
36 FF 2E 9D 7A 36 FF 2E 9F B4 36 FF 2E 9F B6 36 -- 019A70
B8 3E C5 2E 5E 5F 00 5C FE EC 9A 02 80 68 9D 78 -- 019A80
75 00 01 3D 05 8B 9F AC 3E C5 2E 00 00 05 C7 9F -- 019A90
FF 2E 9F B8 36 FF 2E 9F BA 36 FF 2E 02 82 68 1F -- 019AA0
0A C4 83 00 64 3A 84 9A 9F BC 36 FF 2E 9F BE 36 -- 019AB0
2E 9D 32 36 FF 2E 00 64 22 FA 9A 00 54 C8 76 9A -- 019AC0
36 FF 2E 02 82 68 00 6A 00 6A 00 6A 9D 30 36 FF -- 019AD0
36 FF 2E 04 6A 0A 6A 04 6A 9F B8 36 FF 2E 9F BA -- 019AE0
9A 1A C4 83 00 5C A6 44 9A 9F C0 36 FF 2E 9F C2 -- 019AF0
21 74 00 01 3D 05 8B 9F AC 3E C5 2E 00 64 23 34 -- 019B00
C6 36 FF 2E 00 6A 00 6A 00 6A 00 6A 00 6A 00 6A -- 019B10
46 89 10 C4 83 00 5C A2 86 9A 9F C4 36 FF 2E 9F -- 019B20
16 00 1C 69 49 9A 00 01 05 C7 9D 58 3E C5 2E FC -- 019B30
83 00 64 40 D0 9A 6F 6A 03 6A 16 6A 50 FC 46 8D -- 019B40
FC 46 8D 16 13 74 00 3D 83 9D 0C 3E C5 2E 0A C4 -- 019B50
16 0A C4 83 00 64 40 D0 9A 6F 6A 03 6A 35 6A 50 -- 019B60
83 00 64 40 D0 9A 6F 6A 03 6A 13 6A 50 FC 46 8D -- 019B70
40 D0 9A 6F 6A 03 6A 03 6A 50 FC 46 8D 16 0A C4 -- 019B80
16 2E 74 00 3D 83 9D 54 3E C5 2E 0A C4 83 00 64 -- 019B90
04 6A 9E 52 36 FF 2E 9E 54 36 FF 2E 50 FC 46 8D -- 019BA0
9D 20 3E C5 2E 0C C4 83 00 64 40 D0 9A 01 F8 68 -- 019BB0
3E C5 2E 0D FF 9D 28 3E C5 2E 07 EB 00 00 05 C7 -- 019BC0
C5 2E 50 FC 46 8D 16 1B 7C 00 01 3D 05 8B 9D 28 -- 019BD0
83 00 64 40 D0 9A 01 F6 68 03 6A 35 FF 9D 28 3E -- 019BE0
7B 2C 9A 00 00 05 C7 9D 28 3E C5 2E D2 EB 0A C4 -- 019BF0
6E 9A 05 74 00 3D 83 9D 5C 3E C5 2E 00 1C 01 FE -- 019C00
00 05 C7 9C DE 3E C5 2E 00 64 0E 74 9A 00 44 E1 -- 019C10
EC 8B 55 57 56 CB 5E 5F C9 9B 00 1C 8E 8D 9A 00 -- 019C20
83 00 64 4E E3 9A 35 FF 02 75 FF 9D B8 3E C5 2E -- 019C30
64 4E E3 9A 35 FF 02 75 FF 9D BC 3E C5 2E 04 C4 -- 019C40
46 C6 00 00 26 C8 57 56 CB 5E 5F C9 04 C4 83 00 -- 019C50
5C 97 1E 9A 9F C8 36 FF 2E 9F CA 36 FF 2E 00 EB -- 019C60
E9 7E 80 E9 46 FE 03 EB 00 E9 46 C6 04 C4 83 00 -- 019C70
FC 46 FF 03 EB 00 00 FC 46 C7 00 B3 E9 03 72 04 -- 019C80
4C 06 03 2E 09 E0 C1 FC 46 8B E4 74 04 FC 7E 83 -- 019C90
2A E9 46 8A EE 56 89 EC 46 89 9F 4E 16 8B 2E 9F -- 019CA0
DA 46 C7 05 EB 00 FF DA 46 C7 07 75 FC 46 3B E4 -- 019CB0
00 FA 7E 81 FA 46 FF 03 EB 00 00 FA 46 C7 00 7F -- 019CC0
46 8B EE 5E 8E EC 7E 03 E7 D1 FA 7E 8B 12 74 01 -- 019CD0
76 FF 00 5C ED 99 9A F0 46 D9 9B E4 EB 05 89 DA -- 019CE0
```

122

```
CC 36 FF 2E 9F CE 36 FF 2E 50 E4 2A E9 46 8A FC -- 019CF0
76 FF 50 FE 46 8D 16 10 C4 83 00 5C 97 1E 9A 9F -- 019D00
E9 46 8A FC 76 FF EC 76 FF EE 76 FF E4 76 FF E6 -- 019D10
D0 9A 01 45 68 09 6A 50 E4 2A EB 46 8A 50 E4 2A -- 019D20
FF 2E 9F D2 36 FF 2E FF 54 E9 16 C4 83 00 64 40 -- 019D30

CB 5E 5F C9 9B 04 C4 83 00 5C 97 1E 9A 9F D0 36 -- 019D40
EC 5E D9 9B 9F D4 06 DD 2E 9B 00 00 32 C8 57 56 -- 019D50
1E 9A 9F DC 36 FF 2E 9F DE 36 FF 2E 00 E7 46 C6 -- 019D60
80 E5 46 FE 03 EB 00 E5 46 C6 04 C4 83 00 5C 97 -- 019D70
FF 03 EB 00 00 FC 46 C7 01 94 E9 03 72 04 E5 7E -- 019D80
03 2E 09 E0 C1 FC 46 8B E4 74 04 FC 7E 83 FC 46 -- 019D90
C5 2E EA 56 89 E8 46 89 9F 4E 16 8B 2E 9F 4C 06 -- 019DA0
46 89 02 55 8B 05 03 09 E0 C1 FC 46 8B 9D B8 3E -- 019DB0
03 09 E0 C1 FC 46 8B 9D BC 3E C5 2E DE 56 89 DC -- 019DC0
50 E4 2A E5 46 8A DA 56 89 D8 46 89 02 55 8B 05 -- 019DD0
D8 9B 9E C0 0E DC 2E 9B 02 C4 83 00 5C ED AF 9A -- 019DE0
F0 66 D8 9B 9E C0 06 DD 2E 9B F0 5E D9 9B EC 76 -- 019DF0
F4 66 D8 9B 9E C0 06 DD 2E 9B F4 5E D9 9B 01 FE -- 019E00
9A 00 5C ED 99 9A 9F 50 0E DC 2E 9B F0 66 D8 9B -- 019E10
EB 00 00 FA 46 C7 F8 46 89 08 C4 83 00 5C ED F9 -- 019E20
7E 8B 00 8C E9 03 75 01 00 FA 7E 81 FA 46 FF 03 -- 019E30
DA 5E 8E D8 7E 03 E7 D1 00 F0 E7 81 04 E7 C1 FA -- 019E40
E7 81 FA 7E 8B CE 5E DD 9B 0D DE 9B F0 46 D9 9B -- 019E50
DE 9B F4 46 D9 9B DE 5E 8E DC 7E 03 E7 D1 00 F0 -- 019E60
F9 9A 00 5C ED 99 9A F8 46 DE 9B CE 46 DC 9B 0D -- 019E70
FA 7E 8B 11 7D C0 0B D6 46 89 08 C4 83 00 5C ED -- 019E80
7E 81 93 EB 00 00 05 C7 EA 5E 8E E8 7E 03 E7 D1 -- 019E90
EA 5E 8E E8 7E 03 E7 D1 FA 7E 8B 12 7E 00 FF D6 -- 019EA0
8E E8 7E 03 E7 D1 FA 7E 8B FF 7A E9 00 FF 05 C7 -- 019EB0
99 9A F0 46 D9 9B FF 67 E9 05 89 D6 46 8B EA 5E -- 019EC0
E2 36 FF 2E 50 E4 2A E5 46 8A FC 76 FF 00 5C ED -- 019ED0
8D 16 10 C4 83 00 5C 97 1E 9A 9F E0 36 FF 2E 9F -- 019EE0
FF E8 76 FF EA 76 FF E0 76 FF E2 76 FF 50 FE 46 -- 019EF0
09 6A 50 E4 2A E7 46 8A 50 E4 2A E5 46 8A FC 76 -- 019F00
FF 2E FE 73 E9 16 C4 83 00 64 40 D0 9A 01 45 68 -- 019F10
04 C4 83 00 5C 97 1E 9A 9F E4 36 FF 2E 9F E6 36 -- 019F20
9F EA 36 FF 2E 00 00 06 C8 57 56 CB 5E 5F C9 9B -- 019F30
3E C5 2E 04 C4 83 00 5C 97 1E 9A 9F E8 36 FF 2E -- 019F40
FD 46 FE 03 EB 01 FD 46 C6 FA 46 88 05 8B 9D 10 -- 019F50
50 FD 46 8D 16 50 FE 46 8D 16 2B 73 05 FD 7E 80 -- 019F60
50 40 E4 2A FD 46 8A 01 6A 01 6A 50 FA 46 8D 16 -- 019F70
EB 18 C4 83 00 64 40 D0 9A 01 43 68 0A 6A 00 6A -- 019F80
00 5C 97 1E 9A 9F EC 36 FF 2E 9F EE 36 FF 2E CC -- 019F90
FF 46 C6 00 01 42 C8 57 56 CB 5E 5F C9 04 C4 83 -- 019FA0
C7 00 04 B6 46 C7 7D 00 B8 46 C7 35 FD 46 C6 04 -- 019FB0
C7 00 01 FF 46 86 C7 04 00 B2 46 C7 00 08 B4 46 -- 019FC0
01 FF 4C 86 C7 00 02 FF 4A 86 C7 00 01 FF 48 86 -- 019FD0
52 86 C7 00 01 FF 50 86 C7 00 02 FF 4E 86 C7 00 -- 019FE0
C7 00 02 FF 56 86 C7 00 02 FF 54 86 C7 00 02 FF -- 019FF0
5C 86 C7 00 03 FF 5A 86 C7 00 02 FF 58 86 01 FE -- 01A000
C7 00 02 FF 60 86 C7 00 03 FF 5E 86 C7 00 02 FF -- 01A010
03 FF 66 86 C7 00 03 FF 64 86 C7 00 03 FF 62 86 -- 01A020
6C 86 C7 00 04 FF 6A 86 C7 00 03 FF 68 86 C7 00 -- 01A030
C7 00 03 FF 70 86 C7 00 04 FF 6E 86 C7 00 03 FF -- 01A040
04 FF 76 86 C7 00 04 FF 74 86 C7 00 04 FF 72 86 -- 01A050
7C 86 C7 00 01 FF 7A 86 C7 00 04 FF 78 86 C7 00 -- 01A060
46 C7 00 01 80 46 C7 00 01 FF 7E 86 C7 00 01 FF -- 01A070
88 46 C7 00 01 86 46 C7 00 02 84 46 C7 00 01 82 -- 01A080
02 8E 46 C7 00 02 8C 46 C7 00 02 8A 46 C7 00 02 -- 01A090
```

```
00 03 94 46 C7 00 02 92 46 C7 00 02 90 46 C7 00 -- 01A0A0
C7 00 03 9A 46 C7 00 03 98 46 C7 00 02 96 46 C7 -- 01A0B0
46 C7 00 03 A0 46 C7 00 03 9E 46 C7 00 03 9C 46 -- 01A0C0
A8 46 C7 00 03 A6 46 C7 00 04 A4 46 C7 00 03 A2 -- 01A0D0

FE BE 86 C7 00 04 AC 46 C7 00 04 AA 46 C7 00 04 -- 01A0E0
86 C7 00 01 FE C2 86 C7 00 00 FE C0 86 C7 00 00 -- 01A0F0
00 00 FE C8 86 C7 00 01 FE C6 86 C7 00 00 FE C4 -- 01A100
FE CE 86 C7 00 01 FE CC 86 C7 00 01 FE CA 86 C7 -- 01A110
86 C7 00 02 FE D2 86 C7 00 01 FE D0 86 C7 00 01 -- 01A120
00 01 FE D8 86 C7 00 02 FE D6 86 C7 00 01 FE D4 -- 01A130
FE DE 86 C7 00 02 FE DC 86 C7 00 02 FE DA 86 C7 -- 01A140
86 C7 00 03 FE E2 86 C7 00 02 FE E0 86 C7 00 02 -- 01A150
00 02 FE E8 86 C7 00 03 FE E6 86 C7 00 02 FE E4 -- 01A160
FE EE 86 C7 00 03 FE EC 86 C7 00 03 FE EA 86 C7 -- 01A170
86 C7 00 04 FE F2 86 C7 00 03 FE F0 86 C7 00 03 -- 01A180
00 03 FE F8 86 C7 00 04 FE F6 86 C7 00 03 FE F4 -- 01A190
FE FE 86 C7 00 04 FE FC 86 C7 00 04 FE FA 86 C7 -- 01A1A0
86 C7 00 00 FF 02 86 C7 00 04 FF 00 86 C7 00 04 -- 01A1B0
00 00 FF 08 86 C7 00 00 FF 06 86 C7 00 00 FF 04 -- 01A1C0
FF 0E 86 C7 00 01 FF 0C 86 C7 00 00 FF 0A 86 C7 -- 01A1D0
86 C7 00 01 FF 12 86 C7 00 01 FF 10 86 C7 00 00 -- 01A1E0
00 01 FF 18 86 C7 00 01 FF 16 86 C7 00 01 FF 14 -- 01A1F0
86 C7 00 02 FF 1C 86 C7 00 01 FF 1A 86 C7 01 FE -- 01A200
00 02 FF 22 86 C7 00 02 FF 20 86 C7 00 01 FF 1E -- 01A210
FF 28 86 C7 00 02 FF 26 86 C7 00 02 FF 24 86 C7 -- 01A220
86 C7 00 03 FF 2C 86 C7 00 02 FF 2A 86 C7 00 02 -- 01A230
00 03 FF 32 86 C7 00 03 FF 30 86 C7 00 02 FF 2E -- 01A240
FF 38 86 C7 00 03 FF 36 86 C7 00 03 FF 34 86 C7 -- 01A250
86 C7 00 04 FF 3C 86 C7 00 03 FF 3A 86 C7 00 03 -- 01A260
00 04 FF 42 86 C7 00 04 FF 40 86 C7 00 03 FF 3E -- 01A270
9F F0 36 FF 2E 9F F2 36 FF 2E 00 04 FF 44 86 C7 -- 01A280
A1 9A B8 76 FF B6 76 FF 04 C4 83 00 5C 97 1E 9A -- 01A290
F6 36 FF 2E B0 56 89 AE 46 89 04 C4 83 00 64 4E -- 01A2A0
46 8B 04 C4 83 00 5C 97 1E 9A 9F F4 36 FF 2E 9F -- 01A2B0
46 8D 16 57 56 02 C3 E9 C0 2B 05 75 AE 46 0B B0 -- 01A2C0
C6 46 C7 5E 5F 00 8C 00 02 9A 34 6A 00 6A 50 C8 -- 01A2D0
01 24 E9 03 7C 02 C6 7E 83 C6 46 FF 03 EB 00 00 -- 01A2E0
56 89 BE 46 89 99 C7 8B F8 8B B2 6E F7 C6 46 8B -- 01A2F0
BA 46 83 08 EB 00 00 BC 46 C7 00 00 BA 46 C7 C0 -- 01A300
BA 7E 83 34 7F 08 7C 00 BC 7E 83 00 BC 56 83 01 -- 01A310
EF 6E 9A BA 76 FF BC 76 FF 0A 6A 00 6A 2E 73 28 -- 01A320
E6 D1 BE 76 8B 00 D2 83 00 01 05 08 C4 83 00 5C -- 01A330
EB 05 89 B0 5E 8E AE 7E 03 FE 03 E7 D1 BA 7E 8B -- 01A340
46 C7 00 00 BA 46 C7 00 C0 56 83 28 BE 46 83 BC -- 01A350
B2 7E 8B 00 BC 56 83 02 BA 46 83 08 EB 00 00 BC -- 01A360
FF 64 E9 03 7D 0D 7F BC 56 3B 99 C7 8B 28 EF 83 -- 01A370
14 6A 00 6A 1A 6A 00 6A FF 5C E9 03 77 BA 46 3B -- 01A380
01 B9 08 C4 83 00 5C EF 6E 9A BA 76 FF BC 76 FF -- 01A390
C4 83 00 5C EE D0 9A 50 52 FA E2 D2 D1 E0 D1 00 -- 01A3A0
8B 34 C6 46 6B C8 8B E0 D1 C4 46 8B C4 46 89 08 -- 01A3B0
BE 76 8B FF 46 85 8B F9 03 FE 03 1F 16 FD 8B F0 -- 01A3C0
89 B0 5E 8E AE 7E 03 FE 03 E7 D1 BA 7E 8B E6 D1 -- 01A3D0
8B F0 8B 34 C6 46 6B C8 8B E0 D1 40 C4 46 8B 05 -- 01A3E0
E6 D1 BE 76 8B FF 46 85 8B F9 03 FE 03 1F 16 FD -- 01A3F0
5E 8E AE 7E 03 47 47 FE 03 E7 D1 BA 7E 8B 01 FE -- 01A400
9F F8 36 FF 2E 9F FA 36 FF 2E FF 51 E9 05 89 B0 -- 01A410
83 04 EB 00 02 C6 46 C7 04 C4 83 00 5C 97 1E 9A -- 01A420
8B 00 89 E9 03 7F C6 46 3B 48 B4 46 8B 02 C6 46 -- 01A430
C0 56 89 BE 46 89 99 C7 8B F8 8B B2 6E F7 C6 46 -- 01A440
```

```
01  BA  46  83  08  EB  00  00  BC  46  C7  00  00  BA  46  C7  --  01A450
3B  C0  7C  07  7F  BC  56  3B  99  B2  46  8B  00  BC  56  83  --  01A460
8B  B0  5E  8E  AE  7E  03  E7  D1  BA  7E  8B  BB  76  BA  46  --  01A470

AE  7E  03  FE  03  E7  D1  BA  7E  8B  E6  D1  BE  76  8B  05  --  01A480
03  E7  D1  BA  7E  8B  E6  D1  B2  76  8B  05  89  B0  5E  8E  --  01A490
CA  8B  E2  D1  BE  56  8B  05  8B  B0  5E  8E  AE  7E  03  FE  --  01A4A0
7E  03  F9  03  FE  03  E7  D1  BA  7E  8B  E6  D1  B2  76  8B  --  01A4B0
36  FF  2E  9F  FE  36  FF  2E  94  EB  05  89  B0  5E  8E  AE  --  01A4C0
8B  00  00  C8  46  C7  04  C4  83  00  5C  97  1E  9A  9F  FC  --  01A4D0
C6  46  FF  03  EB  00  00  C6  46  C7  CA  46  89  48  B2  46  --  01A4E0
F7  B4  46  8B  74  7E  C6  46  3B  B4  7E  F7  99  03  00  B8  --  01A4F0
C7  CE  46  89  48  CC  46  03  B4  46  8B  CC  46  89  C6  6E  --  01A500
83  01  BA  46  83  08  EB  00  00  BC  46  C7  00  00  BA  46  --  01A510
86  A0  BA  7E  81  07  7F  F2  7C  01  BC  7E  83  00  BC  56  --  01A520
50  C8  46  8D  16  00  6A  00  6A  50  C2  46  8D  16  E9  72  --  01A530
50  98  FF  46  8A  50  98  FD  46  8A  AE  76  FF  B0  76  FF  --  01A540
A0  02  36  FF  2E  C6  76  FF  14  C4  83  00  54  5C  A2  9A  --  01A550
FF  7D  E9  06  C4  83  00  5C  97  1E  9A  A0  00  36  FF  2E  --  01A560
83  00  5C  97  1E  9A  A0  04  36  FF  2E  A0  06  36  FF  2E  --  01A570
04  C4  83  00  64  4E  E3  9A  AE  76  FF  B0  76  FF  04  C4  --  01A580
46  C6  03  FF  46  C6  00  00  5C  C8  57  56  CB  5E  5F  C9  --  01A590
FF  AE  46  C7  00  04  B0  46  C7  01  FF  B2  46  C7  13  FD  --  01A5A0
A0  08  36  FF  2E  A0  0A  36  FF  2E  FF  80  AC  46  C7  01  --  01A5B0
A1  9A  B2  76  FF  B0  76  FF  04  C4  83  00  5C  97  1E  9A  --  01A5C0
0B  AA  46  8B  AA  56  89  A8  46  89  04  C4  83  00  64  4E  --  01A5D0
46  C7  00  00  C6  46  C7  02  A4  E9  C0  2B  05  75  A8  46  --  01A5E0
C6  7E  83  C6  46  FF  03  EB  00  00  B6  46  C7  00  00  B4  --  01A5F0
02  C4  83  00  64  4E  56  9A  AC  76  FF  74  7D  0C  01  FE  --  01A600
A0  0E  1E  8E  2E  A0  0C  3E  03  2E  02  E7  C1  C6  7E  8B  --  01A610
A0  0C  3E  03  2E  02  E7  C1  C6  7E  8B  02  55  89  05  89  --  01A620
01  B4  6E  83  33  75  05  0B  02  45  8B  A0  0E  1E  8E  2E  --  01A630
A0  0C  3E  03  2E  02  E7  C1  4F  C6  7E  8B  00  B6  5E  83  --  01A640
02  E7  C1  C6  7E  8B  02  55  8B  05  8B  A0  0E  1E  8E  2E  --  01A650
83  02  55  89  05  89  A0  0E  1E  8E  2E  A0  0C  3E  03  2E  --  01A660
76  FF  00  0C  C6  46  C7  83  EB  00  B6  56  83  01  B4  46  --  01A670
10  36  FF  2E  A0  12  36  FF  2E  B4  76  FF  B6  76  FF  C6  --  01A680
50  C8  46  8D  16  57  56  0A  C4  83  00  5C  97  1E  9A  A0  --  01A690
00  00  C8  46  C7  5E  5F  00  8C  00  02  9A  34  6A  00  6A  --  01A6A0
00  CE  46  C7  00  00  CC  46  C7  CA  46  89  48  AE  46  8B  --  01A6B0
01  80  C6  7E  81  C6  46  FF  03  EB  00  00  C6  46  C7  00  --  01A6C0
8D  16  00  6A  00  6A  50  C2  46  8D  16  01  9A  E9  03  7C  --  01A6D0
46  8A  50  98  FD  46  8A  A8  76  FF  AA  76  FF  50  C8  46  --  01A6E0
00  00  C4  46  C7  14  C4  83  00  54  5C  A2  9A  50  98  FF  --  01A6F0
99  C6  46  8B  C0  46  89  A0  14  3E  F7  2E  99  C6  46  8B  --  01A700
46  8B  BE  46  89  07  FC  C7  69  FA  8B  A0  14  3E  F7  2E  --  01A710
00  B6  46  C7  00  00  B4  46  C7  BC  46  89  03  FE  05  BE  --  01A720
3B  99  AE  46  8B  00  B6  56  83  01  B4  46  83  08  EB  00  --  01A730
15  E9  03  77  B4  46  3B  01  1D  E9  03  7D  0D  7F  B6  56  --  01A740
FA  E2  D2  D1  E0  D1  00  01  B9  B6  56  8B  B4  46  8B  01  --  01A750
5E  8E  A8  7E  03  E7  D1  C4  7E  8B  A6  56  89  A4  46  89  --  01A760
A0  0C  36  03  2E  02  E6  C1  C0  76  8B  E4  2A  05  8A  AA  --  01A770
8E  26  3C  03  26  BE  7E  03  A4  7E  8B  A0  0E  06  8E  2E  --  01A780
D1  E0  D1  00  01  B9  B6  56  8B  B4  46  8B  05  88  02  5C  --  01A790
7E  03  E7  D1  C4  7E  8B  A6  56  89  A4  46  89  FA  E2  D2  --  01A7A0
03  2E  02  E6  C1  C0  76  8B  E4  2A  05  8A  AA  5E  8E  A8  --  01A7B0
26  47  BE  7E  03  A4  7E  8B  A0  0E  06  8E  2E  A0  0C  36  --  01A7C0
01  B9  B6  56  8B  B4  46  8B  05  88  02  5C  8E  26  3C  03  --  01A7D0
C4  7E  8B  A6  56  89  A4  46  89  FA  E2  D2  D1  E0  D1  00  --  01A7E0
C1  C0  76  8B  E4  2A  05  8A  AA  5E  8E  A8  7E  03  E7  D1  --  01A7F0
```

EP 0 533 348 A2

```
7E 8B A0 0E 06 8E 2E A0 0C 36 03 2E 02 E6 01 FE -- 01A800
B4 46 8B 05 88 02 5C 8E 26 3C 03 26 BC 7E 03 A4 -- 01A810

89 A4 46 89 FA E2 D2 D1 E0 D1 00 01 B9 B6 56 8B -- 01A820
2A 05 8A AA 5E 8E A8 7E 03 E7 D1 C4 7E 8B A6 56 -- 01A830
0E 06 8E 2E A0 0C 36 03 2E 02 E6 C1 C0 76 8B E4 -- 01A840
88 02 5C 8E 26 3C 03 26 47 BC 7E 03 A4 7E 8B A0 -- 01A850
59 E9 CE 46 FF CC 46 FF FE CD E9 02 C4 46 83 05 -- 01A860
00 5C 97 1E 9A A0 16 36 FF 2E A0 18 36 FF 2E FE -- 01A870
C4 83 00 64 4E E3 9A A8 76 FF AA 76 FF 04 C4 83 -- 01A880
04 F7 ED 86 C6 00 08 4C C8 57 56 CB 5E 5F C9 04 -- 01A890
89 A0 1C 16 8B 2E A0 1A 06 8B 2E 35 F7 EB 86 C6 -- 01A8A0
89 A0 20 16 8B 2E A0 1E 06 8B 2E F4 56 89 F2 46 -- 01A8B0
6A 00 6A 50 F7 B6 86 8D 16 57 56 F0 56 89 EE 46 -- 01A8C0
86 C7 00 00 F7 B6 86 C7 5E 5F 00 8C 00 02 9A 34 -- 01A8D0
00 00 F7 BC 86 C7 00 00 F7 BA 86 C7 03 FD F7 B8 -- 01A8E0
7C 03 00 FC 7E 81 FC 46 FF 03 EB 00 00 FC 46 C7 -- 01A8F0
F0 86 89 A0 22 3E F7 2E 99 FC 46 8B 01 51 E9 03 -- 01A900
03 FE C7 69 FA 8B A0 22 3E F7 2E 99 FC 46 8B F7 -- 01A910
46 83 FE 46 FF 0B EB 00 00 FE 46 C7 F7 EE 86 89 -- 01A920
00 99 E9 03 7C 03 FE FE 7E 81 02 EE 46 83 02 F2 -- 01A930
05 02 45 6B EE 7E C5 D0 8B 03 04 45 6B EE 7E C5 -- 01A940
C3 03 04 03 26 07 05 6B F2 7E C5 EE 76 C4 D8 8B -- 01A950
03 2E 02 E6 C1 F7 F0 B6 8B C8 8B 04 F8 C1 C2 03 -- 01A960
26 FE 7E 03 F7 EE BE 8B A0 0E 06 8E 2E A0 0C 36 -- 01A970
83 F6 46 89 C1 03 E4 2A 05 8A 02 5C 8E 26 3C 03 -- 01A980
7E 00 FF F6 7E 81 00 00 F6 46 C7 05 7D 00 F6 7E -- 01A990
89 A0 22 3E F7 2E 99 F6 46 8B 00 FF F6 46 C7 05 -- 01A9A0
F2 7E C5 C6 2B F6 46 8B 06 E6 C1 F8 76 8B F8 46 -- 01A9B0
2B 00 04 B8 1F 16 FD 03 E7 D1 FE 7E 8B 02 45 89 -- 01A9C0
2D F4 56 8B F2 46 8B FF 52 E9 F7 F2 85 89 F8 46 -- 01A9D0
8B EE 46 8B 02 55 89 05 89 A0 24 3E C5 2E 07 FC -- 01A9E0
A0 24 3E C5 2E F4 56 89 F2 46 89 07 FC 2D F0 56 -- 01A9F0
86 8D 16 F0 56 89 EE 46 89 02 55 8B 05 8B 01 FE -- 01AA00
86 8D 16 50 F7 B6 86 8D 16 00 6A 00 6A 50 F7 B4 -- 01AA10
9A 50 98 F7 ED 86 8A 50 98 F7 EB 86 8A 50 F7 F2 -- 01AA20
FF F7 BC 86 FF F7 BA 86 FF 14 C4 83 00 54 5C A2 -- 01AA30
5C 97 1E 9A A0 28 36 FF 2E A0 2A 36 FF 2E FC 76 -- 01AA40
46 FF 03 EB 00 00 FA 46 C7 FE A2 E9 06 C4 83 00 -- 01AA50
3E 03 2E 02 E7 C1 FA 7E 8B 1F 7D 0C FA 7E 83 FA -- 01AA60
64 4E E3 9A 35 FF 02 75 FF A0 0E 1E 8E 2E A0 0C -- 01AA70
90 C2 00 3C 86 9A CB 5E 5F C9 D8 EB 04 C4 83 00 -- 01AA80
2F A0 00 3C 2F 9E 00 3C 38 6A 00 3C 37 D4 00 3C -- 01AA90
00 FF 00 24 F4 96 00 3C 2F A6 00 3C 2F A4 00 3C -- 01AAA0
00 3C 38 74 00 3C 38 64 00 3C 91 20 00 24 F4 CB -- 01AAB0
00 3C 86 9E 00 3C 2E BA 00 3C 2F 9A 00 3C 91 10 -- 01AAC0
00 3C 86 A2 00 3C 91 18 00 3C 86 9C 00 3C 91 32 -- 01AAD0
00 3C 2C 82 00 3C 87 E2 00 3C 36 EE 00 3C 86 F6 -- 01AAE0
00 3C 38 62 00 3C 2F 98 00 3C 37 D6 00 3C 31 FE -- 01AAF0
00 3C 32 C8 00 3C 2F 9C 00 3C 36 06 00 3C 2F A2 -- 01AB00
00 3C 2E CC 00 3C 35 F0 00 3C 35 9C 00 3C 40 A6 -- 01AB10
00 6C 27 C4 00 3C 31 32 00 3C 30 66 00 3C 2F 20 -- 01AB20
00 3C 90 D8 00 3C 32 C0 00 3C AF 10 00 3C B3 22 -- 01AB30
00 3C 90 C0 00 3C 31 98 00 3C 87 6E 00 3C 91 0E -- 01AB40
00 3C 36 C0 00 3C 36 08 00 3C 30 CC 00 3C 2F DC -- 01AB50
00 3C B3 10 00 3C 40 7A 00 3C 40 76 00 3C 36 02 -- 01AB60
00 6C 29 14 00 3C AE 60 00 3C 90 C6 00 3C 90 ED -- 01AB70
00 3C B3 2A 00 3C B3 14 00 3C B4 2A 00 3C B3 16 -- 01AB80
00 3C 36 04 00 3C 37 A6 00 3C B3 12 00 3C B1 10 -- 01AB90
00 3C 36 C2 00 3C 36 CA 00 3C 38 6C 00 3C 38 70 -- 01ABA0
```

126

EP 0 533 348 A2

```
00 3C 36 FE 00 3C 32 64 00 3C 37 A8 00 3C 37 B0 -- 01ABB0
00 3C 37 16 00 3C 37 06 00 3C 32 68 00 3C 37 0E -- 01ABC0
00 3C 36 30 00 3C 36 20 00 3C 36 28 00 3C 36 18 -- 01ABD0
00 3C 2C 99 00 3C 2F A8 00 3C 32 CC 00 3C 2C 8B -- 01ABE0
AF F4 00 05 00 04 00 03 00 3C 2C A7 00 3C 2C A0 -- 01ABF0
00 24 B0 00 00 24 AF F8 00 24 AF FC 00 24 01 FE -- 01AC00
00 24 AF E4 00 24 AB A8 00 24 AF E2 00 24 B0 04 -- 01AC10
00 24 AF E8 00 3C 30 4A 00 24 AF EC 00 3C 30 46 -- 01AC20
00 3C 90 A0 00 3C 30 52 00 24 AF F0 00 3C 30 4E -- 01AC30
00 3C 37 D8 00 3C 90 AC 00 3C 90 A8 00 3C 90 A4 -- 01AC40
38 52 00 3C 38 5E 00 3C 38 5A 00 3C 38 50 00 02 -- 01AC50
00 00 40 59 00 00 00 00 00 00 00 3C 38 56 00 3C -- 01AC60
87 DA 00 3C 90 BC 00 3C 30 62 3F F0 00 00 00 00 -- 01AC70
92 38 00 3C 30 3E 00 3C 87 DE 00 3C 30 42 00 3C -- 01AC80
92 44 00 3C 92 40 00 3C 30 20 00 3C 92 3C 00 3C -- 01AC90
28 E4 00 6C 28 E0 00 3C 2E CA 00 3C 30 24 00 3C -- 01ACA0
91 36 00 3C 91 3A 00 3C 2F B8 00 1C 76 67 00 6C -- 01ACB0
28 E8 00 3C AE EC 00 3C F5 A4 00 3C 91 3E 00 3C -- 01ACC0
40 7E 00 3C 38 68 00 3C 38 66 00 6C 28 EC 00 6C -- 01ACD0
92 52 00 3C 91 12 3F E0 00 00 00 00 00 00 00 3C -- 01ACE0
00 00 00 3C 38 76 00 3C 92 54 00 3C 35 84 00 3C -- 01ACF0
28 74 00 3C 92 4E 00 44 56 D4 40 6F E0 00 00 00 -- 01AD00
2C B3 00 3C 2C AE 00 3C AE C6 00 3C 90 36 00 6C -- 01AD10
32 AE 00 3C 32 A4 00 3C 90 7A 00 3C 90 7E 00 3C -- 01AD20
32 8C 00 3C 32 94 00 3C 32 B6 00 3C 32 A6 00 3C -- 01AD30
32 84 00 3C 32 80 00 3C 32 7C 00 3C 32 90 00 3C -- 01AD40
2C B8 00 3C 86 A0 00 3C 32 DC 00 3C 32 88 00 3C -- 01AD50
2C C6 00 3C 2C C0 00 3C 32 E6 00 3C 32 E8 00 3C -- 01AD60
2D 11 00 3C 2C EB 00 3C 2C D3 00 3C 2C CC 00 3C -- 01AD70
2D 3D 00 3C 2D 25 40 08 00 00 00 00 00 00 00 3C -- 01AD80
2D B9 00 3C 2D 99 00 3C 2D 77 00 3C 2D 63 00 3C -- 01AD90
2E 1A 00 3C 2E 08 00 3C 2D E7 00 3C 2D D1 00 3C -- 01ADA0
2E 6E 00 3C 40 BA 00 3C 2E 56 00 3C 2E 39 00 3C -- 01ADB0
00 3C 48 E6 00 3C 40 EA 00 3C 2E 90 00 20 00 3C -- 01ADC0
00 00 02 C8 57 56 00 3C 2E A2 00 3C 50 E2 00 40 -- 01ADD0
6A E6 AC 36 FF 2E E6 AE 36 FF 2E 50 FE 46 8D 16 -- 01ADE0
CB 5E 5F C9 0C C4 83 00 64 40 D0 9A 01 F8 68 04 -- 01ADF0
3E C5 2E 50 FE 46 8D 16 00 00 02 C8 57 56 01 FE -- 01AE00
C4 83 00 64 40 D0 9A 01 FA 68 03 6A 35 FF E6 B0 -- 01AE10
E6 B4 3E C5 2E 00 01 28 C8 57 56 CB 5E 5F C9 0A -- 01AE20
05 8B E6 B8 3E C5 2E 00 64 22 15 9A 00 08 05 C7 -- 01AE30
2E E6 BE 36 FF 2E 00 14 F1 5A 9A 05 74 00 03 3D -- 01AE40
C5 2E 06 C4 83 00 64 24 00 9A 01 6A E6 BC 36 FF -- 01AE50
2B 02 EB 00 01 B8 05 75 00 03 3D 05 8B E6 B8 3E -- 01AE60
00 05 C7 E6 C4 3E C5 2E 05 89 E6 C0 3E C5 2E C0 -- 01AE70
9B 00 00 02 45 C7 00 00 05 C7 E6 C8 3E C5 2E 00 -- 01AE80
C7 E6 D0 3E C5 2E 1D D9 9B E6 CC 3E C5 2E EE D9 -- 01AE90
D8 3E C5 2E 00 00 05 C7 E6 D4 3E C5 2E 00 00 05 -- 01AEA0
DC 3E C5 2E 05 FF E6 B0 3E C5 2E 00 0D 05 C7 E6 -- 01AEB0
36 FF 2E 35 FF E6 B0 3E C5 2E 19 74 00 3D 80 E6 -- 01AEC0
16 06 C4 83 00 5C 97 1E 9A E6 E0 36 FF 2E E6 E2 -- 01AED0
01 F5 68 03 6A 35 FF E6 B0 3E C5 2E 50 FE 46 8D -- 01AEE0
76 FF 0E 74 00 FE 7E 83 0A C4 83 00 64 40 D0 9A -- 01AEF0
B0 3E C5 2E 04 FC E9 02 C4 83 00 1C E0 E7 9A FE -- 01AF00
3E C5 2E EE D9 9B 05 89 E6 E4 3E C5 2E 05 8B E6 -- 01AF10
3E C5 2E 1D D9 9B E6 E8 3E C5 2E 15 D9 9B E6 AC -- 01AF20
3E C5 2E 1D D9 9B E6 EC 3E C5 2E 05 D9 9B E6 F0 -- 01AF30
46 8D 16 1D D9 9B E6 F4 3E C5 2E 05 D9 9B E6 F8 -- 01AF40
F8 68 04 6A E6 AC 36 FF 2E E6 AE 36 FF 2E 50 FE -- 01AF50
```

127

```
FF 0E 74 00 FE 7E 83 0C C4 83 00 64 40 D0 9A 01 -- 01AF60
3E C5 2E 04 8B E9 02 C4 83 00 1C E0 E7 9A FE 76 -- 01AF70
2E 00 00 05 C7 E6 FC 3E C5 2E 00 00 05 C7 E6 E4 -- 01AF80
02 36 FF 2E 50 FE 46 8D 16 16 05 C6 E7 00 3E C5 -- 01AF90
64 40 D0 9A 6E 6A 05 6A 01 6A E7 00 36 FF 2E E7 -- 01AFA0
E0 E7 9A FE 76 FF 0E 74 00 FE 7E 83 0E C4 83 00 -- 01AFB0
4E A1 9A 01 00 68 24 6A 04 40 E9 02 C4 83 00 1C -- 01AFC0
0B 02 55 89 05 89 E7 04 3E C5 2E 04 C4 83 00 64 -- 01AFD0
17 E9 02 C4 83 00 1C E0 E7 9A 10 6D 68 0E 75 C2 -- 01AFE0
12 6A 00 A3 E9 03 75 00 3D 83 E7 08 3E C5 2E 04 -- 01AFF0
E7 10 36 FF 2E E7 12 36 FF 2E 01 6A 01 6A 01 FE -- 01B000
83 00 5C 93 FD 9A E7 0C 36 FF 2E E7 0E 36 FF 2E -- 01B010
C4 83 00 5C ED 6E 9A 50 E6 46 8D 16 50 52 0C C4 -- 01B020
D8 86 C7 E4 56 89 E2 46 89 E8 56 8B E6 46 8B 0A -- 01B030
02 75 FF E7 04 3E C5 2E 00 6A 00 FF 68 00 01 FE -- 01B040
64 43 5D 9A E2 76 FF E4 76 FF FE D8 B6 FF 35 FF -- 01B050
E7 04 3E C5 2E 20 74 C0 0B FE 46 89 0E C4 83 00 -- 01B060
FE 76 FF 04 C4 83 00 64 4E E3 9A 35 FF 02 75 FF -- 01B070
50 E6 46 8D 16 03 7F E9 02 C4 83 00 1C E0 E7 9A -- 01B080
00 05 C7 E7 14 3E C5 2E 04 C4 83 00 5C 94 D5 9A -- 01B090
A6 5D 9A 35 FF 02 75 FF E7 04 3E C5 2E 20 EB 00 -- 01B0A0
C7 E7 14 3E C5 2E 00 4C 00 BC 9A 04 C4 83 00 1C -- 01B0B0
00 3D 83 E6 C0 3E C5 2E 00 1C B5 6A 9A 00 01 05 -- 01B0C0
C0 3E C5 2E 01 DF 46 C6 04 EB 03 DF 46 C6 06 74 -- 01B0D0
05 C7 E7 18 3E C5 2E 01 5F E9 03 75 00 3D 83 E6 -- 01B0E0
E7 1C 3E C5 2E E4 2A 05 8A E7 20 3E C5 2E 00 03 -- 01B0F0
E7 24 3E C5 2E E4 2A 05 8A E7 28 3E C5 2E 05 89 -- 01B100
E7 30 3E C5 2E 00 08 05 C7 E7 2C 3E C5 2E 05 89 -- 01B110
03 EB 00 00 FC 46 C7 00 00 F8 46 C7 00 21 05 C7 -- 01B120
00 FC 7E 83 02 00 E9 03 75 02 FC 7E 83 FC 46 FF -- 01B130
2E DE 46 88 00 08 0D 05 8B E7 1C 3E C5 2E 1C 75 -- 01B140
C5 2E 1A EB DD 46 88 00 F8 0D 05 8B E7 1C 3E C5 -- 01B150
E7 24 3E C5 2E DE 46 88 00 08 0D 05 8B E7 24 3E -- 01B160
88 C0 2B 50 FE 46 8D 16 DD 46 88 00 F8 0D 05 8B -- 01B170
00 10 B8 50 E4 2A DB 46 88 C0 2B 50 E4 2A DA 46 -- 01B180
2A DE 46 8A 50 E4 2A DD 46 8A 50 E4 2A DC 46 88 -- 01B190
E1 46 88 C0 2B 50 E4 2A E0 46 88 00 04 B8 50 E4 -- 01B1A0
16 C4 83 00 64 40 D0 9A 01 4F 68 09 6A 50 E4 2A -- 01B1B0
00 FF B8 50 E4 2A DA 46 88 C0 2B 50 FE 46 8D 16 -- 01B1C0
8A 50 E4 2A DC 46 88 00 10 B8 50 E4 2A DB 46 88 -- 01B1D0
E4 2A DF 46 8A 50 E4 2A DE 46 8A 50 E4 2A DD 46 -- 01B1E0
D0 9A 01 4F 68 09 6A 50 E4 2A E1 46 88 C0 2B 50 -- 01B1F0
76 FF 0E 74 00 FE 7E 83 16 C4 83 00 64 40 01 FE -- 01B200
2A DE 46 8A 01 F0 E9 02 C4 83 00 1C E0 E7 9A FE -- 01B210
3B E4 2A DD 46 8A 10 FA 46 83 04 EB FA 46 89 E4 -- 01B220
16 FD 03 F8 46 FF F8 7E 8B FE FB E9 03 73 FA 46 -- 01B230
C7 E7 18 3E C5 2E DC EB FE DA 85 88 FA 46 8B 1F -- 01B240
2C 3E C5 2E 00 25 05 C7 E7 30 3E C5 2E 00 7F 05 -- 01B250
46 C6 80 DE 46 C6 00 00 F8 46 C7 00 80 05 C7 E7 -- 01B260
2B 50 E4 2A DA 46 88 C0 2B 50 FE 46 8D 16 F8 DD -- 01B270
50 E4 2A DC 46 88 00 01 B8 50 E4 2A DB 46 88 C0 -- 01B280
88 00 04 B8 50 E4 2A DE 46 8A 50 E4 2A DD 46 8A -- 01B290
68 09 6A 50 E4 2A E1 46 88 C0 2B 50 E4 2A E0 46 -- 01B2A0
2B 50 FE 46 8D 16 16 C4 83 00 64 40 D0 9A 01 4F -- 01B2B0
50 E4 2A DB 46 88 00 FF B8 50 E4 2A DA 46 88 C0 -- 01B2C0
8A 50 E4 2A DD 46 8A 50 E4 2A DC 46 88 00 01 B8 -- 01B2D0
E1 46 88 C0 2B 50 E4 2A DF 46 8A 50 E4 2A DE 46 -- 01B2E0
16 C4 83 00 64 40 D0 9A 01 4F 68 09 6A 50 E4 2A -- 01B2F0
```

128

```
C4 83 00 1C E0 E7 9A FE 76 FF 0E 74 00 FE 7E 83 -- 01B300
46 FF 03 EB FA 46 89 E4 2A DE 46 8A 00 F8 E9 02 -- 01B310
46 FF F8 7E 8B 13 72 FA 46 3B E4 2A DD 46 8A FA -- 01B320
C5 2E E0 EB FE DA 85 88 FA 46 8B 1F 16 FD 03 F8 -- 01B330
46 FF 03 EB 00 00 FC 46 C7 00 01 05 C7 E7 34 3E -- 01B340
8B FC 7E 03 E7 38 3E C5 2E 0F 74 10 FC 7E 83 FC -- 01B350
2E 00 00 05 C7 E7 3C 3E C5 2E E8 EB 05 88 FC 46 -- 01B360
10 05 C7 E7 44 3E C5 2E 00 00 05 C7 E7 40 3E C5 -- 01B370
E7 38 36 FF 2E E7 3A 36 FF 2E 50 FE 46 8D 16 00 -- 01B380
F8 76 FF 35 FF E7 44 3E C5 2E 50 FE DA 86 8D 16 -- 01B390
0A 6A 35 FF E7 40 3E C5 2E 35 FF E7 3C 3E C5 2E -- 01B3A0
74 00 FE 7E 83 18 C4 83 00 64 40 D0 9A 01 43 68 -- 01B3B0
C5 2E 3E EB 02 C4 83 00 1C E0 E7 9A FE 76 FF 0D -- 01B3C0
C5 2E 05 8B E7 54 3E C5 2E 00 00 05 C7 E7 48 3E -- 01B3D0
58 3E C5 2E 05 89 E7 4C 3E C5 2E 05 89 E7 50 3E -- 01B3E0
C7 E7 5C 3E C5 2E 00 1C B5 E1 9A 00 00 05 C7 E7 -- 01B3F0
C9 9B 00 00 05 C7 E7 60 3E C5 2E 00 00 05 01 FE -- 01B400
EA 9E D9 9B EE D9 9B 00 01 44 C8 57 56 CB 5E 5F -- 01B410
06 DD 2E 9B FE EE 9E D9 9B E7 64 06 DD 2E 9B FE -- 01B420
9E D9 9B E7 74 06 DD 2E 9B FE F2 9E D9 9B E7 6C -- 01B430
E9 86 C6 FE FA 9E D9 9B E7 7C 06 DD 2E 9B FE F6 -- 01B440
86 C7 00 0B FE E0 86 C7 00 00 FE E4 86 C7 00 FE -- 01B450
00 0A FE C0 86 C7 00 07 FE DC 86 C7 00 38 FE DE -- 01B460
FE D8 86 C7 00 0A FE BC 86 C7 00 0A FE BE 86 C7 -- 01B470
C7 50 7D 05 FE D8 BE 83 FE D8 86 FF 04 EB 00 00 -- 01B480
05 FE D6 BE 83 FE D6 86 FF 04 EB 00 00 FE D6 86 -- 01B490
BE 83 FE D4 86 FF 04 EB 00 00 FE D4 86 C7 E2 7D -- 01B4A0
8B FE E9 86 FE E4 2A FE E9 86 8A E2 7D 05 FE D4 -- 01B4B0
86 03 03 E0 C1 FE D8 86 8B 1F 16 FD 03 E7 D1 F8 -- 01B4C0
C6 CB EB FF 06 85 89 FE D4 86 03 03 E0 C1 FE D6 -- 01B4D0
72 7D FE E9 BE 80 FE E9 86 FE 04 EB 00 FE E9 86 -- 01B4E0
86 C6 00 00 FE CA 86 C7 FE E4 86 FF 02 71 E9 03 -- 01B4F0
03 72 7D FE E7 BE 80 FE E7 86 FE 04 EB 00 FE E7 -- 01B500
16 FD 03 E7 D1 F8 8B E4 2A FE E7 86 8A 00 E9 E9 -- 01B510
D5 7C 00 FE DA BE 83 FE DA 86 89 FF 06 85 8B 1F -- 01B520
86 8B FE D8 86 89 E7 84 3E F7 2E 99 FE DA 86 8B -- 01B530
FE DA 86 23 FE DE 86 8B BD 75 FE E0 86 23 FE D8 -- 01B540
86 23 FE D6 86 8B FE D6 86 89 E7 86 3E F7 2E 99 -- 01B550
FE D4 86 89 FE DA 86 23 FE DC 86 8B A1 75 FE E0 -- 01B560
86 2B FE C0 86 8B 8B 75 FE E0 86 23 FE D4 86 8B -- 01B570
86 89 FE D6 86 2B FE BE 86 8B FE D2 86 89 FE D8 -- 01B580
86 8B FE CE 86 89 FE D4 86 2B FE BC 86 8B FE D0 -- 01B590
FE D0 AE F7 FE D0 86 8B F0 8B FE CE AE F7 FE CE -- 01B5A0
86 89 C6 03 C7 03 FE D2 AE F7 FE D2 86 8B F8 8B -- 01B5B0
8A FF 36 E9 03 7F FE CA 86 3B FE CC 86 8B FE CC -- 01B5C0
CA 86 89 FE CC 86 8B FE C8 86 89 E4 2A FE E7 86 -- 01B5D0
C4 86 89 FE D6 86 8B FE C6 86 89 FE D8 86 8B FE -- 01B5E0
FE CA BE 83 FF 09 E9 FE C2 86 89 FE D4 86 8B FE -- 01B5F0
89 E7 86 3E F7 2E 99 FE E0 86 8B 11 75 00 01 FE -- 01B600
0A 7E 03 F8 8B 24 FE E4 86 6B FE E4 E9 FE E0 86 -- 01B610
16 F5 03 02 E6 C1 FE C6 B6 8B 00 05 C6 0C 5E 8E -- 01B620
DC 2E 9B FE EA A4 D8 26 9B E7 7C 06 DD 2E 9B 07 -- 01B630
F9 9A 00 5C ED 99 9A E7 90 06 DC 2E 9B E7 88 0E -- 01B640
0A 7E 03 FA 8B 24 FE E4 96 6B 08 C4 83 00 5C ED -- 01B650
16 F5 03 02 E6 C1 FE C4 B6 8B 04 45 89 0C 5E 8E -- 01B660
DC 2E 9B FE EA A4 D8 26 9B E7 7C 06 DD 2E 9B 07 -- 01B670
F9 9A 00 5C ED 99 9A E7 90 06 DC 2E 9B E7 88 0E -- 01B680
0A 7E 03 FA 8B 24 FE E4 96 6B 08 C4 83 00 5C ED -- 01B690

16 F5 03 02 E6 C1 FE C2 B6 8B 06 45 89 0C 5E 8E -- 01B6A0
```

```
DC  2E  9B  FE  EA  A4  D8  26  9B  E7  7C  06  DD  2E  9B  07  --  01B6B0
F9  9A  00  5C  ED  99  9A  E7  90  06  DC  2E  9B  E7  88  0E  --  01B6C0
0A  7E  03  FA  8B  24  FE  E4  96  6B  08  C4  83  00  5C  ED  --  01B6D0
0A  7E  03  F8  8B  24  FE  E4  86  6B  08  45  89  0C  5E  8E  --  01B6E0
0A  46  03  24  FE  E4  86  6B  00  FF  0A  45  C7  0C  5E  8E  --  01B6F0
E2  86  C7  04  C4  83  00  64  5C  5E  9A  50  52  0C  56  8B  --  01B700
1C  7D  10  FE  E2  BE  83  FE  E2  86  FF  04  EB  00  04  FE  --  01B710
0A  7E  03  E7  D1  FE  E2  BE  8B  F0  8B  24  FE  E4  86  6B  --  01B720
FE  C6  86  8B  D9  EB  00  00  04  45  C7  FE  03  0C  5E  8E  --  01B730
FE  C2  86  8B  FE  BE  86  89  FE  C4  86  8B  FE  C0  86  89  --  01B740
85  C7  1F  16  FD  03  E7  D1  FE  C8  BE  8B  FE  BC  86  89  --  01B750
86  FE  04  EB  00  FE  E9  86  C6  FD  81  E9  FF  FF  FF  06  --  01B760
00  BE  E9  03  72  00  82  3D  E4  2A  FE  E9  86  8A  FE  E9  --  01B770
5E  8E  0A  7E  03  F8  8B  24  FE  E4  86  6B  FE  E4  86  FF  --  01B780
6B  E7  98  3E  F7  2E  99  00  64  55  EA  9A  00  05  C6  0C  --  01B790
9A  04  45  89  0C  5E  8E  0A  7E  03  FA  8B  24  FE  E4  96  --  01B7A0
8B  24  FE  E4  96  6B  E7  98  3E  F7  2E  99  00  64  55  EA  --  01B7B0
99  00  64  55  EA  9A  06  45  89  0C  5E  8E  0A  7E  03  FA  --  01B7C0
8E  0A  7E  03  FA  8B  24  FE  E4  96  6B  E7  98  3E  F7  2E  --  01B7D0
0C  56  8B  0A  46  03  24  FE  E4  86  6B  08  45  89  0C  5E  --  01B7E0
8B  24  FE  E4  86  6B  04  C4  83  00  64  5C  5E  9A  50  52  --  01B7F0
86  C7  00  FF  0A  45  C7  0C  5E  8E  0A  7E  03  F8  01  FE  --  01B800
7C  10  FE  E2  BE  83  FE  E2  86  FF  04  EB  00  04  FE  E2  --  01B810
D1  FE  E2  BE  8B  F0  8B  24  FE  E4  86  6B  FF  4C  E9  03  --  01B820
D6  EB  00  00  04  45  C7  FE  03  0C  5E  8E  0A  7E  03  E7  --  01B830
C4  2E  FF  00  96  89  FE  FE  86  89  0C  56  8B  0A  46  8B  --  01B840
00  9E  8E  FE  FE  BE  03  F8  8B  24  04  6B  26  E7  1C  36  --  01B850
F8  8B  24  04  6B  26  E7  1C  36  C4  2E  80  04  45  C6  FF  --  01B860
1C  36  C4  2E  80  06  45  C6  FF  00  9E  8E  FE  FE  BE  03  --  01B870
C6  FF  00  9E  8E  FE  FE  BE  03  F8  8B  24  04  6B  26  E7  --  01B880
BE  03  F8  8B  24  04  6B  26  E7  1C  36  C4  2E  80  08  45  --  01B890
26  E7  24  36  C4  2E  FF  0A  45  C6  FF  00  9E  8E  FE  FE  --  01B8A0
04  45  C6  FF  00  9E  8E  FE  FE  BE  03  F8  8B  24  04  6B  --  01B8B0
FE  FE  BE  03  F8  8B  24  04  6B  26  E7  24  36  C4  2E  5A  --  01B8C0
04  6B  26  E7  24  36  C4  2E  5A  06  45  C6  FF  00  9E  8E  --  01B8D0
2E  5A  08  45  C6  FF  00  9E  8E  FE  FE  BE  03  F8  8B  24  --  01B8E0
9E  8E  FE  FE  BE  03  F8  8B  24  04  6B  26  E7  24  36  C4  --  01B8F0
8B  24  04  6B  26  E7  1C  36  C4  2E  FF  0A  45  C6  FF  00  --  01B900
2A  0B  45  88  00  FF  B8  FF  00  9E  8E  FE  FE  BE  03  F8  --  01B910
FE  FE  BE  03  FA  8B  24  14  6B  26  E7  1C  36  C4  2E  E4  --  01B920
6B  26  E7  1C  36  C4  2E  E4  2A  09  45  88  FF  00  9E  8E  --  01B930
2A  07  45  88  FF  00  9E  8E  FE  FE  BE  03  FA  8B  24  14  --  01B940
FE  FE  BE  03  FA  8B  24  14  6B  26  E7  1C  36  C4  2E  E4  --  01B950
24  04  6B  26  E7  24  36  C4  2E  05  45  88  FF  00  9E  8E  --  01B960
0B  45  88  00  FF  B8  FF  00  9E  8E  FE  FE  BE  03  F8  8B  --  01B970
FE  BE  03  FA  8B  24  14  6B  26  E7  24  36  C4  2E  E4  2A  --  01B980
26  E7  24  36  C4  2E  E4  2A  09  45  88  FF  00  9E  8E  FE  --  01B990
07  45  88  FF  00  9E  8E  FE  FE  BE  03  FA  8B  24  14  6B  --  01B9A0
FE  BE  03  FA  8B  24  14  6B  26  E7  24  36  C4  2E  E4  2A  --  01B9B0
04  6B  26  E7  1C  36  C4  2E  05  45  88  FF  00  9E  8E  FE  --  01B9C0
C4  2E  03  05  C6  FF  00  9E  8E  FE  FE  BE  03  F8  8B  24  --  01B9D0
00  9E  8E  FE  FE  BE  03  F8  8B  24  04  6B  26  E7  24  36  --  01B9E0
FF  04  86  FF  04  EB  00  01  FF  04  86  C7  03  05  C6  FF  --  01B9F0
E9  03  7E  05  3B  FF  04  86  8B  E7  54  3E  C5  2E  01  FE  --  01BA00
00  9E  8E  FE  FE  BE  03  F8  8B  24  FF  04  86  6B  01  1C  --  01BA10
04  86  6B  05  88  E7  9A  3E  C5  2E  E4  2A  04  45  8A  FF  --  01BA20
2A  06  45  8A  FF  00  9E  8E  FE  FE  BE  03  F8  8B  24  FF  --  01BA30

F8  8B  24  FF  04  86  6B  01  45  88  E7  9A  3E  C5  2E  E4  --  01BA40
3E  C5  2E  E4  2A  08  45  8A  FF  00  9E  8E  FE  FE  BE  03  --  01BA50
```

130

```
FE  FE  BE  03  F8  8B  24  FF  04  86  6B  02  45  88  E7  9A  --  01BA60
45  88  E7  9A  3E  C5  2E  E4  2A  0A  45  8A  FF  00  9E  8E  --  01BA70
9A  36  FF  2E  E7  9C  36  FF  2E  50  FF  02  86  8D  16  03  --  01BA80
01  97  68  06  6A  E7  9E  36  FF  2E  E7  A0  36  FF  2E  E7  --  01BA90
2A  05  8A  E7  9E  3E  C5  2E  10  C4  83  00  64  40  D0  9A  --  01BAA0
45  88  0C  5E  8E  0A  7E  03  FA  8B  24  FF  04  96  6B  E4  --  01BAB0
24  FF  04  96  6B  E4  2A  01  45  8A  E7  9E  3E  C5  2E  01  --  01BAC0
E7  9E  3E  C5  2E  02  45  88  0C  5E  8E  0A  7E  03  FA  8B  --  01BAD0
8E  0A  7E  03  FA  8B  24  FF  04  96  6B  E4  2A  02  45  8A  --  01BAE0
05  88  E7  A2  3E  C5  2E  FF  04  86  8B  03  45  88  0C  5E  --  01BAF0
E7  A2  36  FF  2E  E7  A4  36  FF  2E  50  FF  02  86  8D  16  --  01BB00
06  6A  35  FF  E6  D0  3E  C5  2E  35  FF  E6  D4  3E  C5  2E  --  01BB10
C9  9B  FE  D0  E9  10  C4  83  00  64  40  D0  9A  01  32  68  --  01BB20
00  3D  83  E7  08  3E  C5  2E  EC  8B  55  57  56  CB  5E  5F  --  01BB30
05  C7  0A  7E  C5  07  EB  00  01  05  C7  0A  7E  C5  09  74  --  01BB40
5C  CC  ED  9A  00  00  02  C8  57  56  CB  5E  5F  C9  00  02  --  01BB50
D9  9B  E7  AE  3E  C5  2E  1D  DD  9B  E7  A6  3E  C5  2E  00  --  01BB60
C5  2E  E7  A6  36  C4  2E  1D  DD  9B  E7  AA  3E  C5  2E  05  --  01BB70
76  00  5C  ED  94  9A  1C  DC  26  9B  05  D9  9B  E7  B2  3E  --  01BB80
64  28  52  9A  12  93  68  03  6A  00  6A  00  6A  00  6A  15  --  01BB90
2E  00  01  05  C7  E7  B6  3E  C5  2E  2B  EB  0A  C4  83  00  --  01BBA0
05  C7  E6  B4  3E  C5  2E  FE  46  89  05  8B  E6  B4  3E  C5  --  01BBB0
89  E6  B4  3E  C5  2E  FE  46  8B  00  54  A2  55  9A  00  07  --  01BBC0
5C  CC  ED  9A  00  00  02  C8  57  56  CB  5E  5F  C9  9B  05  --  01BBD0
C5  2E  E7  AA  36  C4  2E  1D  DD  9B  E7  AA  3E  C5  2E  00  --  01BBE0
76  00  5C  ED  94  9A  1C  DC  26  9B  05  D9  9B  E7  BA  3E  --  01BBF0
52  9A  12  93  68  03  6A  00  6A  00  6A  00  6A  15  01  FE  --  01BC00
01  05  C7  E7  B6  3E  C5  2E  2B  EB  0A  C4  83  00  64  28  --  01BC10
E6  B4  3E  C5  2E  FE  46  89  05  8B  E6  B4  3E  C5  2E  00  --  01BC20
B4  3E  C5  2E  FE  46  8B  00  54  A2  55  9A  00  07  05  C7  --  01BC30
ED  9A  00  00  02  C8  57  56  CB  5E  5F  C9  9B  05  89  E6  --  01BC40
E7  A6  3E  C5  2E  15  DD  9B  E7  AA  3E  C5  2E  00  5C  CC  --  01BC50
05  D9  9B  E7  B2  3E  C5  2E  E7  A6  36  C4  2E  1D  DD  9B  --  01BC60
E7  AA  36  C4  2E  18  77  00  5C  ED  94  9A  1C  DC  26  9B  --  01BC70
5C  ED  94  9A  1C  DC  26  9B  05  D9  9B  E7  BA  3E  C5  2E  --  01BC80
52  9A  12  93  68  03  6A  00  6A  00  6A  00  6A  15  76  00  --  01BC90
01  05  C7  E7  B6  3E  C5  2E  2B  EB  0A  C4  83  00  64  28  --  01BCA0
E6  B4  3E  C5  2E  FE  46  89  05  8B  E6  B4  3E  C5  2E  00  --  01BCB0
B4  3E  C5  2E  FE  46  8B  00  54  A2  55  9A  00  07  05  C7  --  01BCC0
94  68  00  00  04  C8  57  56  CB  5E  5F  C9  9B  05  89  E6  --  01BCD0
56  89  FC  46  89  04  C4  83  00  64  4E  A1  9A  01  6A  00  --  01BCE0
02  C4  83  00  1C  E0  E7  9A  10  6D  68  0D  75  C2  0B  FE  --  01BCF0
46  8B  1C  75  05  0B  02  45  8B  E6  C8  3E  C5  2E  73  EB  --  01BD00
C5  2E  02  55  89  05  89  E7  BE  3E  C5  2E  FE  56  8B  FC  --  01BD10
C5  E7  BE  3E  C5  2E  3B  EB  02  55  89  05  89  E6  C8  3E  --  01BD20
BE  3E  C5  2E  02  55  89  05  89  FE  56  8B  FC  46  8B  3D  --  01BD30
2E  06  55  89  04  45  89  FC  7E  C5  02  55  8B  05  8B  E7  --  01BD40
E7  BE  3E  C5  2E  02  55  8B  05  8B  3D  C5  E7  BE  3E  C5  --  01BD50
00  00  05  C7  3D  C5  E7  BE  3E  C5  2E  02  55  89  05  89  --  01BD60
2E  00  00  2A  C8  57  56  CB  5E  5F  C9  00  00  02  45  C7  --  01BD70
2E  05  FF  E6  B0  3E  C5  2E  00  01  05  C7  E7  48  3E  C5  --  01BD80
35  FF  E6  B0  3E  C5  2E  19  74  00  3D  80  E6  DC  3E  C5  --  01BD90
83  00  5C  97  1E  9A  E7  C2  36  FF  2E  E7  C4  36  FF  2E  --  01BDA0
03  6A  35  FF  E6  B0  3E  C5  2E  50  D6  46  8D  16  06  C4  --  01BDB0
74  00  D6  7E  83  0A  C4  83  00  64  40  D0  9A  01  F5  68  --  01BDC0
C5  2E  6B  EB  02  C4  83  00  1C  E0  E7  9A  D6  76  FF  0D  --  01BDD0

D8  46  8D  16  05  89  E6  E4  3E  C5  2E  05  8B  E6  B0  3E  --  01BDE0
2E  9A  50  D8  46  8D  16  04  C4  83  00  5C  E0  79  9A  50  --  01BDF0
C6  3E  C5  2E  E8  46  D9  9B  04  C4  83  00  5C  29  01  FE  --  01BE00
```

```
1D  D9  9B  E7  CA  3E  C5  2E  EC  46  D9  9B  1D  D9  9B  E7  --  01BE10
3E  C5  2E  00  5C  ED  99  9A  05  D9  9B  E7  CA  3E  C5  2E  --  01BE20
FF  E7  2C  3E  C5  2E  00  5C  ED  99  9A  05  D9  9B  E7  C6  --  01BE30
CB  5E  5F  C9  9B  14  C4  83  00  64  20  EA  9A  07  6A  35  --  01BE40
00  5C  E0  79  9A  50  D6  46  8D  16  00  00  2E  C8  57  56  --  01BE50
04  C4  83  00  5C  29  2E  9A  50  D6  46  8D  16  04  C4  83  --  01BE60
EA  46  D9  9B  1D  D9  9B  E7  CE  3E  C5  2E  E6  46  D9  9B  --  01BE70
05  D9  9B  E7  D2  3E  C5  2E  1D  D9  9B  E7  D2  3E  C5  2E  --  01BE80
ED  99  9A  05  D9  9B  E7  CE  3E  C5  2E  00  5C  ED  99  9A  --  01BE90
00  64  20  EA  9A  07  6A  35  FF  E7  2C  3E  C5  2E  00  5C  --  01BEA0
05  D9  9B  E7  C6  3E  C5  2E  E7  CE  36  C4  2E  14  C4  83  --  01BEB0
E7  C6  3E  C5  2E  0A  73  00  5C  ED  94  9A  1C  D8  26  9B  --  01BEC0
3E  C5  2E  05  D9  9B  E7  CE  3E  C5  2E  08  EB  05  D9  9B  --  01BED0
9B  E7  CA  3E  C5  2E  E7  D2  36  C4  2E  1D  D9  9B  E7  D6  --  01BEE0
3E  C5  2E  0A  73  00  5C  ED  94  9A  1C  D8  26  9B  05  D9  --  01BEF0
2E  05  D9  9B  E7  D2  3E  C5  2E  08  EB  05  D9  9B  E7  CA  --  01BF00
C6  3E  C5  2E  E7  CE  36  C4  2E  1D  D9  9B  E7  DA  3E  C5  --  01BF10
2E  0A  76  00  5C  ED  94  9A  1C  D8  26  9B  05  D9  9B  E7  --  01BF20
D9  9B  E7  CE  3E  C5  2E  08  EB  05  D9  9B  E7  C6  3E  C5  --  01BF30
2E  E7  D2  36  C4  2E  04  5D  D9  9B  E7  D6  3E  C5  2E  05  --  01BF40
00  5C  ED  94  9A  1C  D8  26  9B  05  D9  9B  E7  CA  3E  C5  --  01BF50
D2  3E  C5  2E  08  EB  05  D9  9B  E7  CA  3E  C5  2E  0A  76  --  01BF60
AF  1A  9A  04  5D  D9  9B  E7  DA  3E  C5  2E  05  D9  9B  E7  --  01BF70
1C  BC  87  9A  05  74  00  3D  83  E7  58  3E  C5  2E  00  1C  --  01BF80
8B  E7  BE  3E  C5  2E  00  00  05  C7  E7  14  3E  C5  2E  00  --  01BF90
3E  C5  2E  D4  56  89  D2  46  89  00  1A  05  02  55  8B  05  --  01BFA0
05  D9  9B  E7  DA  3E  C5  2E  0D  18  45  C6  3D  C5  E7  BE  --  01BFB0
D9  9B  D2  7E  C5  64  55  D9  9B  3D  C5  E7  BE  3E  C5  2E  --  01BFC0
C5  E7  BE  3E  C5  2E  05  D9  9B  E7  D6  3E  C5  2E  38  5D  --  01BFD0
DA  36  C4  2E  34  5D  D9  9B  D2  7E  C5  60  55  D9  9B  3D  --  01BFE0
C5  2E  24  D8  26  9B  04  45  D9  9B  E7  DA  3E  C5  2E  E7  --  01BFF0
D9  9B  D2  7E  C5  68  55  D9  9B  3D  C5  E7  BE  3E  01  FE  --  01C000
04  45  D9  9B  E7  D6  3E  C5  2E  E7  D6  36  C4  2E  3C  5D  --  01C010
C5  6C  55  D9  9B  3D  C5  E7  BE  3E  C5  2E  24  D8  26  9B  --  01C020
7E  C5  08  45  89  D2  7E  C5  C0  2B  40  5D  D9  9B  D2  7E  --  01C030
7E  C5  E4  2A  06  45  88  D2  7E  C5  E4  2A  07  45  88  D2  --  01C040
7E  C5  E4  2A  04  45  88  D2  7E  C5  E4  2A  05  45  88  D2  --  01C050
45  89  D2  7E  C5  05  8B  E7  DE  3E  C5  2E  03  45  88  D2  --  01C060
89  3D  C5  E7  BE  3E  C5  2E  05  8B  E7  DE  3E  C5  2E  0A  --  01C070
D4  36  FF  2E  E7  CE  36  FF  2E  E7  D0  36  FF  2E  24  45  --  01C080
57  9A  08  C4  83  00  1C  E2  46  9A  E7  D2  36  FF  2E  E7  --  01C090
00  99  E9  03  75  00  3D  83  E7  E2  3E  C5  2E  00  1C  E1  --  01C0A0
36  FF  2E  50  FE  46  8D  16  07  05  C6  E7  00  3E  C5  2E  --  01C0B0
40  D0  9A  6E  6A  05  6A  01  6A  E7  00  36  FF  2E  E7  02  --  01C0C0
3E  C5  2E  00  05  C6  E7  E6  3E  C5  2E  0E  C4  83  00  64  --  01C0D0
E7  2C  3E  C5  2E  05  88  E7  EA  3E  C5  2E  05  8B  E7  2C  --  01C0E0
FF  2E  50  FE  46  8D  16  05  88  E7  EE  3E  C5  2E  05  8B  --  01C0F0
36  FF  2E  E7  E8  36  FF  2E  E6  CC  36  FF  2E  E6  CE  36  --  01C100
D8  36  FF  2E  E7  DA  36  FF  2E  E7  DC  36  FF  2E  E7  E6  --  01C110
40  D0  9A  00  CC  68  0B  6A  01  6A  E7  D6  36  FF  2E  E7  --  01C120
E7  9A  FE  76  FF  0E  74  00  FE  7E  83  1A  C4  83  00  64  --  01C130
C5  2E  50  FE  46  8D  16  01  DE  E9  02  C4  83  00  1C  E0  --  01C140
83  00  64  40  D0  9A  01  FA  68  03  6A  35  FF  E6  B0  3E  --  01C150
00  1C  E0  E7  9A  FE  76  FF  0E  74  00  FE  7E  83  0A  C4  --  01C160
3E  C5  2E  05  8B  E6  B0  3E  C5  2E  01  B1  E9  02  C4  83  --  01C170

35  FF  E6  FC  3E  C5  2E  50  FE  46  8D  16  05  89  E6  E4  --  01C180
FE  7E  83  0A  C4  83  00  64  40  D0  9A  02  02  68  03  6A  --  01C190
76  E9  02  C4  83  00  1C  E0  E7  9A  FE  76  FF  0E  74  00  --  01C1A0
00  3D  83  E6  C0  3E  C5  2E  05  FF  E6  FC  3E  C5  2E  01  --  01C1B0
```

132

```
2E 50 FE 46 8D 16 0B 05 C6 E7 00 3E C5 2E 27 74 -- 01C1C0
9A 6E 6A 05 6A 01 6A E7 00 36 FF 2E E7 02 36 FF -- 01C1D0
05 C6 E7 00 3E C5 2E 25 EB 0E C4 83 00 64 40 D0 -- 01C1E0
E7 00 36 FF 2E E7 02 36 FF 2E 50 FE 46 8D 16 3A -- 01C1F0
0E C4 83 00 64 40 D0 9A 6E 6A 05 6A 01 6A 01 FE -- 01C200
C4 83 00 1C E0 E7 9A FE 76 FF 0E 74 00 FE 7E 83 -- 01C210
C0 3E C5 2E 01 05 C6 E7 E6 3E C5 2E 01 05 E9 02 -- 01C220
00 01 3D 05 8B E7 F2 3E C5 2E 50 74 00 3D 83 E6 -- 01C230
E7 EA 3E C5 2E E4 2A 05 8A E7 20 3E C5 2E 22 75 -- 01C240
E7 EE 3E C5 2E E4 2A 05 8A E7 20 3E C5 2E 05 88 -- 01C250
3E C5 2E E4 2A 05 8A E7 28 3E C5 2E 3E EB 05 88 -- 01C260
3E C5 2E E4 2A 05 8A E7 28 3E C5 2E 05 88 E7 EA -- 01C270
3E C5 2E 05 8B E7 DE 3E C5 2E 1C EB 05 88 E7 EE -- 01C280
E7 EE 3E C5 2E 05 8B E7 DE 3E C5 2E 05 88 E7 EA -- 01C290
CC 36 FF 2E E6 CE 36 FF 2E 50 FE 46 8D 16 05 88 -- 01C2A0
E7 DC 36 FF 2E E7 E6 36 FF 2E E7 E8 36 FF 2E E6 -- 01C2B0
6A E7 D6 36 FF 2E E7 D8 36 FF 2E E7 DA 36 FF 2E -- 01C2C0
7E 83 1A C4 83 00 64 40 D0 9A 00 CC 68 0B 6A 01 -- 01C2D0
EB 02 C4 83 00 1C E0 E7 9A FE 76 FF 0D 74 00 FE -- 01C2E0
E6 AC 36 FF 2E E6 AE 36 FF 2E 50 FE 46 8D 16 38 -- 01C2F0
FE 7E 83 0C C4 83 00 64 40 D0 9A 01 F8 68 04 6A -- 01C300
09 EB 02 C4 83 00 1C E0 E7 9A FE 76 FF 0D 74 00 -- 01C310
57 56 CB 5E 5F C9 9B 00 00 05 C7 E6 E4 3E C5 2E -- 01C320
01 2D 68 03 6A 07 6A 50 FE 46 8D 16 00 00 02 C8 -- 01C330
76 FF 0D 74 00 FE 7E 83 0A C4 83 00 64 40 D0 9A -- 01C340
50 FE 46 8D 16 25 EB 02 C4 83 00 1C E0 E7 9A FE -- 01C350
83 0A C4 83 00 64 40 D0 9A 01 2F 68 03 6A 07 6A -- 01C360
02 C4 83 00 1C E0 E7 9A FE 76 FF 0B 74 00 FE 7E -- 01C370
05 8B E7 F2 3E C5 2E EC 8B 55 57 56 CB 5E 5F C9 -- 01C380
1C B5 E1 9A 05 EB 00 1C B8 62 9A 07 75 00 01 3D -- 01C390
E7 F6 3E C5 2E 00 00 0A C8 57 56 CB 5E 5F C9 00 -- 01C3A0
00 3D 83 E6 C0 3E C5 2E 02 2D E9 03 75 00 3D 83 -- 01C3B0
2E FB 46 88 05 8B E7 1C 3E C5 2E 01 48 E9 03 75 -- 01C3C0
FE 46 8D 16 FA 46 88 00 F0 0D 05 8B E7 1C 3E C5 -- 01C3D0
E4 2A F8 46 88 C0 2B 50 E4 2A F7 46 88 C0 2B 50 -- 01C3E0
50 E4 2A FA 46 8A 50 E4 2A F9 46 88 00 10 B8 50 -- 01C3F0
E4 2A FC 46 88 00 04 B8 50 E4 2A FB 46 8A 01 FE -- 01C400
D0 9A 01 4F 68 09 6A 50 E4 2A FD 46 88 C0 2B 50 -- 01C410
9A FE 76 FF 0E 74 00 FE 7E 83 16 C4 83 00 64 40 -- 01C420
B8 50 FE 46 8D 16 01 EA E9 02 C4 83 00 1C E0 E7 -- 01C430
E4 2A F8 46 88 00 C1 B8 50 E4 2A F7 46 88 00 04 -- 01C440
50 E4 2A FA 46 8A 50 E4 2A F9 46 88 00 10 B8 50 -- 01C450
2B 50 E4 2A FC 46 88 00 01 B8 50 E4 2A FB 46 8A -- 01C460
64 40 D0 9A 01 4F 68 09 6A 50 E4 2A FD 46 88 C0 -- 01C470
E0 E7 9A FE 76 FF 0E 74 00 FE 7E 83 16 C4 83 00 -- 01C480
88 05 8B E7 24 3E C5 2E 01 8C E9 02 C4 83 00 1C -- 01C490
16 FA 46 88 00 F0 0D 05 8B E7 24 3E C5 2E FB 46 -- 01C4A0
88 C0 2B 50 E4 2A F7 46 88 00 10 B8 50 FE 46 8D -- 01C4B0
46 8A 50 E4 2A F9 46 88 00 10 B8 50 E4 2A F8 46 -- 01C4C0
FC 46 88 00 04 B8 50 E4 2A FB 46 8A 50 E4 2A FA -- 01C4D0
01 4F 68 09 6A 50 E4 2A FD 46 88 C0 2B 50 E4 2A -- 01C4E0
E6 E9 03 75 00 FE 7E 83 16 C4 83 00 64 40 D0 9A -- 01C4F0
2E 01 15 E9 02 C4 83 00 1C E0 E7 9A FE 76 FF 00 -- 01C500
05 8A E7 FE 3E C5 2E 66 74 00 3D 83 E7 FA 3E C5 -- 01C510

FF 2E 50 FE 46 8D 16 05 89 E7 3C 3E C5 2E E4 2A -- 01C520
36 FF 2E E7 2A 36 FF 2E E7 38 36 FF 2E E7 3A 36 -- 01C530
35 FF E7 FA 3E C5 2E 35 FF E7 44 3E C5 2E E7 28 -- 01C540
0A 6A 35 FF E7 40 3E C5 2E 35 FF E7 3C 3E C5 2E -- 01C550
74 00 FE 7E 83 18 C4 83 00 64 40 D0 9A 01 43 68 -- 01C560
```

133

```
2E  00  A5  E9  02  C4  83  00  1C  E0  E7  9A  FE  76  FF  0E  --  01C570
05  C7  E7  3C  3E  C5  2E  5E  74  00  3D  83  E8  02  3E  C5  --  01C580
38  36  FF  2E  E7  3A  36  FF  2E  50  FE  46  8D  16  00  00  --  01C590
E7  44  3E  C5  2E  E7  20  36  FF  2E  E7  22  36  FF  2E  E7  --  01C5A0
35  FF  E7  3C  3E  C5  2E  35  FF  E8  02  3E  C5  2E  35  FF  --  01C5B0
64  40  D0  9A  01  43  68  0A  6A  35  FF  E7  40  3E  C5  2E  --  01C5C0
E0  E7  9A  FE  76  FF  0D  74  00  FE  7E  83  18  C4  83  00  --  01C5D0
2E  4F  3D  8B  E8  02  3E  C5  2E  3D  EB  02  C4  83  00  1C  --  01C5E0
3E  C5  2E  E4  2A  05  8A  E7  22  1E  8E  2E  E7  20  3E  03  --  01C5F0
2E  05  89  E7  DE  3E  C5  2E  E4  2A  05  88  E8  06  01  FE  --  01C600
00  05  C7  E7  58  3E  C5  2E  00  01  05  C7  E7  F2  3E  C5  --  01C610
00  00  0A  C8  57  56  CB  5E  5F  C9  00  1C  BA  CF  9A  00  --  01C620
3E  C5  2E  02  19  E9  03  75  00  3D  83  E7  F6  3E  C5  2E  --  01C630
8B  E7  24  3E  C5  2E  01  34  E9  03  75  00  3D  83  E6  C0  --  01C640
46  88  00  F0  0D  05  8B  E7  24  3E  C5  2E  FB  46  88  05  --  01C650
C0  2B  50  E4  2A  F7  46  88  C0  2B  50  FE  46  8D  16  FA  --  01C660
8A  50  E4  2A  F9  46  88  00  10  B8  50  E4  2A  F8  46  88  --  01C670
46  88  00  04  B8  50  E4  2A  FB  46  8A  50  E4  2A  FA  46  --  01C680
4F  68  09  6A  50  E4  2A  FD  46  88  C0  2B  50  E4  2A  FC  --  01C690
04  B8  50  FE  46  8D  16  16  C4  83  00  64  40  D0  9A  01  --  01C6A0
50  E4  2A  F8  46  88  00  C1  B8  50  E4  2A  F7  46  88  00  --  01C6B0
8A  50  E4  2A  FA  46  8A  50  E4  2A  F9  46  88  00  10  B8  --  01C6C0
C0  2B  50  E4  2A  FC  46  88  00  01  B8  50  E4  2A  FB  46  --  01C6D0
00  64  40  D0  9A  01  4F  68  09  6A  50  E4  2A  FD  46  88  --  01C6E0
1C  E0  E7  9A  FE  76  FF  0E  74  00  FE  7E  83  16  C4  83  --  01C6F0
46  88  05  8B  E7  1C  3E  C5  2E  01  8C  E9  02  C4  83  00  --  01C700
8D  16  FA  46  88  00  F0  0D  05  8B  E7  1C  3E  C5  2E. FB  --  01C710
46  88  C0  2B  50  E4  2A  F7  46  88  00  10  B8  50  FE  46  --  01C720
FA  46  8A  50  E4  2A  F9  46  88  00  10  B8  50  E4  2A  F8  --  01C730
2A  FC  46  88  00  04  B8  50  E4  2A  FB  46  8A  50  E4  2A  --  01C740
9A  01  4F  68  09  6A  50  E4  2A  FD  46  88  C0  2B  50  E4  --  01C750
00  E6  E9  03  75  00  FE  7E  83  16  C4  83  00  64  40  D0  --  01C760
C5  2E  01  15  E9  02  C4  83  00  1C  E0  E7  9A  FE  76  FF  --  01C770
2A  05  8A  E7  FE  3E  C5  2E  66  74  00  3D  83  E8  02  3E  --  01C780
36  FF  2E  50  FE  46  8D  16  05  89  E7  3C  3E  C5  2E  E4  --  01C790
20  36  FF  2E  E7  22  36  FF  2E  E7  38  36  FF  2E  E7  3A  --  01C7A0
2E  35  FF  E8  02  3E  C5  2E  35  FF  E7  44  3E  C5  2E  E7  --  01C7B0
68  0A  6A  35  FF  E7  40  3E  C5  2E  35  FF  E7  3C  3E  C5  --  01C7C0
0E  74  00  FE  7E  83  18  C4  83  00  64  40  D0  9A  01  43  --  01C7D0
C5  2E  00  A5  E9  02  C4  83  00  1C  E0  E7  9A  FE  76  FF  --  01C7E0
00  05  C7  E7  3C  3E  C5  2E  5E  74  00  3D  83  E7  FA  3E  --  01C7F0
36  FF  2E  E7  3A  36  FF  2E  50  FE  46  8D  16  00  01  FE  --  01C800
44  3E  C5  2E  E7  28  36  FF  2E  E7  2A  36  FF  2E  E7  38  --  01C810
FF  E7  3C  3E  C5  2E  35  FF  E7  FA  3E  C5  2E  35  FF  E7  --  01C820
40  D0  9A  01  43  68  0A  6A  35  FF  E7  40  3E  C5  2E  35  --  01C830
E7  9A  FE  76  FF  0D  74  00  FE  7E  83  18  C4  83  00  64  --  01C840
4F  3D  8B  E7  FA  3E  C5  2E  3D  EB  02  C4  83  00  1C  E0  --  01C850
C5  2E  E4  2A  05  8A  E7  2A  1E  8E  2E  E7  28  3E  03  2E  --  01C860
C5  2E  05  89  E7  DE  3E  C5  2E  E4  2A  05  88  E8  06  3E  --  01C870
00  00  05  C7  E7  58  3E  C5  2E  00  02  05  C7  E7  F2  3E  --  01C880
2E  00  00  06  C8  57  56  CB  5E  5F  C9  00  1C  BA  CF  9A  --  01C890
2E  FC  56  89  FA  46  89  02  55  8B  05  8B  E7  04  3E  C5  --  01C8A0
FC  5E  8E  FA  7E  03  F8  8B  24  04  6B  26  E7  DE  36  C4  --  01C8B0

9A  50  E4  2A  05  88  E7  9A  3E  C5  2E  E4  2A  04  45  8A  --  01C8C0
2E  1D  D9  9B  E8  0A  3E  C5  2E  02  C4  83  00  5C  ED  AF  --  01C8D0
2E  FC  56  89  FA  46  89  02  55  8B  05  8B  E7  04  3E  C5  --  01C8E0
FC  5E  8E  FA  7E  03  F8  8B  24  04  6B  26  E7  DE  36  C4  --  01C8F0
50  E4  2A  01  45  88  E7  9A  3E  C5  2E  E4  2A  06  45  8A  --  01C900
5D  D9  9B  E8  0A  3E  C5  2E  02  C4  83  00  5C  ED  AF  9A  --  01C910
```

```
56 89 FA 46 89 02 55 8B 05 8B E7 04 3E C5 2E 04 -- 01C920
8E FA 7E 03 F8 8B 24 04 6B 26 E7 DE 36 C4 2E FC -- 01C930
2A 02 45 88 E7 9A 3E C5 2E E4 2A 08 45 8A FC 5E -- 01C940
9B E8 0A 3E C5 2E 02 C4 83 00 5C ED AF 9A 50 E4 -- 01C950
FA 46 89 02 55 8B 05 8B E7 04 3E C5 2E 08 5D D9 -- 01C960
7E 03 F8 8B 24 04 6B 26 E7 DE 36 C4 2E FC 56 89 -- 01C970
45 88 E7 9A 3E C5 2E E4 2A 0A 45 8A FC 5E 8E FA -- 01C980
0A 3E C5 2E 02 C4 83 00 5C ED AF 9A 50 E4 2A 03 -- 01C990
2E E7 9C 36 FF 2E 50 FE 46 8D 16 0C 5D D9 9B E8 -- 01C9A0
06 6A E8 0E 36 FF 2E E8 10 36 FF 2E E7 9A 36 FF -- 01C9B0
74 00 FE 7E 83 10 C4 83 00 64 40 D0 9A 01 97 68 -- 01C9C0
BA 9A 05 EB 02 C4 83 00 1C E0 E7 9A FE 76 FF 0D -- 01C9D0
3E C5 2E EC 8B 55 57 56 CB 5E 5F C9 9B 00 14 DD -- 01C9E0
3E C5 2E 05 FF E7 4C 3E C5 2E 00 01 05 C7 E7 58 -- 01C9F0
E7 9A 12 95 68 0D 7E 00 7E 3D 05 8B E7 4C 01 FE -- 01CA00
3D 05 8B E7 4C 3E C5 2E 37 EB 02 C4 83 00 1C E0 -- 01CA10
4C 3E C5 2E 40 05 8B E7 54 3E C5 2E 0F 75 01 00 -- 01CA20
88 E8 06 3E C5 2E 05 8B E7 4C 3E C5 2E 05 89 E7 -- 01CA30
C9 00 1C BA CF 9A 05 89 E7 DE 3E C5 2E E4 2A 05 -- 01CA40
05 C7 E7 58 3E C5 2E 00 00 3A C8 57 56 CB 5E 5F -- 01CA50
14 3E C5 2E FE 46 89 05 8B E7 DE 3E C5 2E 00 00 -- 01CA60
00 01 3D 05 8B E7 F2 3E C5 2E 3F 74 00 3D 83 E7 -- 01CA70
05 88 E8 06 3E C5 2E 05 8B E7 1C 3E C5 2E 1A 75 -- 01CA80
24 3E C5 2E 00 98 E9 05 89 E7 DE 3E C5 2E E4 2A -- 01CA90
DE 3E C5 2E E4 2A 05 88 E8 06 3E C5 2E 05 8B E7 -- 01CAA0
C5 2E 05 8B 05 FF E7 54 3E C5 2E 7F EB 05 89 E7 -- 01CAB0
C5 2E 05 89 E7 DE 3E C5 2E E4 2A 05 88 E8 06 3E -- 01CAC0
8B E7 54 3E C5 2E 20 75 00 01 3D 05 8B E7 F2 3E -- 01CAD0
20 3E 03 2E 04 FF 26 3C 8B 26 E8 02 36 C4 2E 05 -- 01CAE0
8B E7 54 3E C5 2E 1E EB 05 88 E7 22 1E 8E 2E E7 -- 01CAF0
28 3E 03 2E 04 FF 26 3C 8B 26 E7 FA 36 C4 2E 05 -- 01CB00
2E 05 8B E7 F2 3E C5 2E 05 88 E7 2A 1E 8E 2E E7 -- 01CB10
1E 8E 2E E8 12 3E 03 2E E7 D1 3D 8B E7 54 3E C5 -- 01CB20
E7 9E 36 FF 2E E7 A0 36 FF 2E 57 56 05 89 E8 14 -- 01CB30
5C FE EC 9A 04 6A E8 0E 36 FF 2E E8 10 36 FF 2E -- 01CB40
88 E7 A2 3E C5 2E 05 8B E7 DE 3E C5 2E 5E 5F 00 -- 01CB50
E7 A2 36 FF 2E E7 A4 36 FF 2E 50 FA 46 8D 16 05 -- 01CB60
06 6A 35 FF E6 D0 3E C5 2E 35 FF E6 D4 3E C5 2E -- 01CB70
74 00 FA 7E 83 10 C4 83 00 64 40 D0 9A 01 32 68 -- 01CB80
2E 03 19 E9 02 C4 83 00 1C E0 E7 9A FA 76 FF 0E -- 01CB90
05 8B E7 DE 3E C5 2E 5F 74 00 3D 83 E7 F6 3E C5 -- 01CBA0
FA 46 8D 16 00 00 05 C7 E7 3C 3E C5 2E FD 46 88 -- 01CBB0
50 FD 46 8D 16 E7 38 36 FF 2E E7 3A 36 FF 2E 50 -- 01CBC0
35 FF E7 3C 3E C5 2E 01 6A 35 FF E7 44 3E C5 2E -- 01CBD0
64 40 D0 9A 01 43 68 0A 6A 35 FF E7 40 3E C5 2E -- 01CBE0
E0 E7 9A FA 76 FF 74 74 00 FA 7E 83 18 C4 83 00 -- 01CBF0
8A E7 FE 3E C5 2E 02 B0 E9 02 C4 83 00 1C 01 FE -- 01CC00
8B E7 DE 3E C5 2E 05 89 E7 3C 3E C5 2E E4 2A 05 -- 01CC10
FF 2E E7 3A 36 FF 2E 50 FA 46 8D 16 FD 46 88 05 -- 01CC20
6A 35 FF E7 44 3E C5 2E 50 FD 46 8D 16 E7 38 36 -- 01CC30
6A 35 FF E7 40 3E C5 2E 35 FF E7 3C 3E C5 2E 01 -- 01CC40
00 FA 7E 83 18 C4 83 00 64 40 D0 9A 01 43 68 0A -- 01CC50

02 4A E9 02 C4 83 00 1C E0 E7 9A FA 76 FF 0E 74 -- 01CC60
DE 3E C5 2E E7 04 36 C4 2E 50 D6 46 8D 16 57 56 -- 01CC70
9A 24 6A 50 52 02 54 8B 26 04 03 26 24 05 6B E7 -- 01CC80
3E C5 2E E7 04 36 C4 2E 57 56 5E 5F 00 5C FE EC -- 01CC90
CA 8B D8 8B 02 54 8B 26 04 03 26 24 05 6B E7 DE -- 01CCA0
24 FE 46 6B E7 04 3E C5 2E 50 00 04 05 C3 8B 51 -- 01CCB0
50 00 04 05 C3 8B 51 CA 8B D8 8B 02 55 8B 05 03 -- 01CCC0
```

135

EP 0 533 348 A2

```
E7 04 3E C5 2E 57 56 5E 5F 00 5C FE EC 9A 20 6A -- 01CCD0
50 D6 46 8D 16 50 52 02 55 8B 05 03 24 FE 46 6B -- 01CCE0
05 8B E7 04 3E C5 2E 5E 5F 00 5C FE EC 9A 24 6A -- 01CCF0
6B 26 E7 DE 36 C4 2E D4 56 89 D2 46 89 02 55 8B -- 01CD00
3E C5 2E 03 05 C6 D4 5E 8E D2 7E 03 F8 8B 24 04 -- 01CD10
3E C5 2E C8 56 89 C6 46 89 02 55 8B 05 8B E7 04 -- 01CD20
3E C5 2E CC 56 89 CA 46 89 02 55 8B 05 8B E7 04 -- 01CD30
3E C5 2E D0 56 89 CE 46 89 02 55 8B 05 8B E7 04 -- 01CD40
36 C4 2E D4 56 89 D2 46 89 02 55 8B 05 8B E7 04 -- 01CD50
FF B8 D4 5E 8E D2 7E 03 F8 8B 24 04 6B 26 E7 DE -- 01CD60
8B 24 14 6B 26 E7 DE 36 C4 2E E4 2A 0B 45 88 00 -- 01CD70
DE 36 C4 2E E4 2A 09 45 88 D0 5E 8E CE 7E 03 FA -- 01CD80
07 45 88 CC 5E 8E CA 7E 03 FA 8B 24 14 6B 26 E7 -- 01CD90
C6 7E 03 FA 8B 24 14 6B 26 E7 DE 36 C4 2E E4 2A -- 01CDA0
02 55 8B 05 8B E7 04 3E C5 2E 05 45 88 C8 5E 8E -- 01CDB0
2E E4 2A 05 8A E7 9E 3E C5 2E D4 56 89 D2 46 89 -- 01CDC0
D4 5E 8E D2 7E 03 FA 8B 24 14 6B 26 E7 DE 36 C4 -- 01CDD0
D2 46 89 02 55 8B 05 8B E7 04 3E C5 2E 01 45 88 -- 01CDE0
36 C4 2E E4 2A 01 45 8A E7 9E 3E C5 2E D4 56 89 -- 01CDF0
D4 5E 8E D2 7E 03 FA 8B 24 14 6B 26 E7 DE 01 FE -- 01CE00
D2 46 89 02 55 8B 05 8B E7 04 3E C5 2E 02 45 88 -- 01CE10
36 C4 2E E4 2A 02 45 8A E7 9E 3E C5 2E D4 56 89 -- 01CE20
45 88 D4 5E 8E D2 7E 03 FA 8B 24 14 6B 26 E7 DE -- 01CE30
E7 04 36 C4 2E 71 74 00 3D 83 E7 14 3E C5 2E 03 -- 01CE40
00 05 C6 02 5C 8E 26 3C 03 26 F8 8B 24 FE 46 6B -- 01CE50
8E 26 3C 03 26 F8 8B 24 FE 46 6B E7 04 36 C4 2E -- 01CE60
56 6B E7 04 36 C4 2E E4 2A 0B 45 88 C0 2B 02 5C -- 01CE70
E4 2A 09 45 88 02 5C 8E 26 3C 03 26 FA 8B 24 FE -- 01CE80
8E 26 3C 03 26 FA 8B 24 FE 56 6B E7 04 36 C4 2E -- 01CE90
24 FE 56 6B E7 04 36 C4 2E E4 2A 07 45 88 02 5C -- 01CEA0
CB 5E 5F C9 05 45 88 02 5C 8E 26 3C 03 26 FA 8B -- 01CEB0
00 5C D0 B3 9A 50 9C 46 8D 16 00 00 66 C8 57 56 -- 01CEC0
89 05 23 E4 2A E2 46 8A E7 18 3E C5 2E 04 C4 83 -- 01CED0
12 3E 03 2E E7 D1 9A 7E 8B E7 F2 36 C4 2E 9A 46 -- 01CEE0
9A 46 8B 21 75 04 3B 26 05 8B E8 14 1E 8E 2E E8 -- 01CEF0
05 89 E7 DE 3E C5 2E E4 2A 05 88 E8 06 3E C5 2E -- 01CF00
5F C9 00 00 05 C7 E7 58 3E C5 2E 00 1C BA CF 9A -- 01CF10
D0 B3 9A 50 9C 46 8D 16 00 00 6C C8 57 56 CB 5E -- 01CF20
23 E4 2A E2 46 8A E7 18 3E C5 2E 04 C4 83 00 5C -- 01CF30
F8 8B E4 2A 9B 46 8A E7 F2 36 C4 2E 9B 46 88 05 -- 01CF40
3B 26 05 8B E8 14 1E 8E 2E E8 12 3E 03 2E E7 D1 -- 01CF50
E7 F6 3E C5 2E 00 01 94 46 C7 00 80 E9 03 74 04 -- 01CF60
C5 2E E4 2A 05 8A E7 FE 3E C5 2E 5C 74 00 3D 83 -- 01CF70
2E E7 3A 36 FF 2E 50 98 46 8D 16 05 89 E7 3C 3E -- 01CF80
35 FF E7 44 3E C5 2E 50 9B 46 8D 16 E7 38 36 FF -- 01CF90
35 FF E7 40 3E C5 2E 35 FF E7 3C 3E C5 2E 01 6A -- 01CFA0
98 7E 83 18 C4 83 00 64 40 D0 9A 01 43 68 0A 6A -- 01CFB0
D9 E9 02 C4 83 00 1C E0 E7 9A 98 76 FF 0E 74 00 -- 01CFC0
9A 6B 75 05 3B E4 2A 9B 46 8A E7 DE 3E C5 2E 01 -- 01CFD0
E7 F6 3E C5 2E 00 00 94 46 C7 64 EB 00 1C BC 1E -- 01CFE0
8D 16 00 00 05 C7 E7 3C 3E C5 2E 55 74 00 3D 83 -- 01CFF0

16 E7 38 36 FF 2E E7 3A 36 FF 2E 50 98 46 01 FE -- 01D000
3E C5 2E 01 6A 35 FF E7 44 3E C5 2E 50 9B 46 8D -- 01D010
01 43 68 0A 6A 35 FF E7 40 3E C5 2E 35 FF E7 3C -- 01D020
76 FF 0E 74 00 98 7E 83 18 C4 83 00 64 40 D0 9A -- 01D030
F2 3E C5 2E 01 60 E9 02 C4 83 00 1C E0 E7 9A 98 -- 01D040
23 C0 2B 02 EB 00 01 B8 05 75 00 01 3D 05 8B E7 -- 01D050
2B 02 EB 00 01 BE 05 75 00 94 7E 83 27 75 94 46 -- 01D060
00 01 B8 05 75 00 02 3D 05 8B E7 F2 3E C5 2E F6 -- 01D070
```

136

```
E4  2A  9B  46  8A  00  92  E9  03  75  C6  23  C0  2B  02  EB  --  01D080
05  C7  E8  14  1E  8E  2E  E8  12  3E  03  2E  E7  D1  F8  8B  --  01D090
02  3E  C5  2E  96  46  FF  03  EB  00  00  96  46  C7  00  02  --  01D0A0
96  7E  03  E7  20  3E  C5  2E  5B  7D  05  3B  96  46  8B  E8  --  01D0B0
8B  26  E7  FA  36  C4  2E  E0  75  9B  46  3A  E4  2A  05  8A  --  01D0C0
46  8A  E7  2A  1E  8E  2E  E7  28  3E  03  2E  04  FF  26  3C  --  01D0D0
96  46  3B  48  05  8B  E8  02  3E  C5  2E  05  88  E4  2A  9B  --  01D0E0
E7  22  1E  8E  2E  E7  20  3E  03  2E  47  96  7E  8B  B7  74  --  01D0F0
46  FF  05  88  96  7E  03  E7  20  3E  C5  2E  E4  2A  05  8A  --  01D100
9B  46  8A  00  8F  E9  0D  FF  E8  02  3E  C5  2E  D2  EB  96  --  01D110
E8  14  1E  8E  2E  E8  12  3E  03  2E  E7  D1  F8  8B  E4  2A  --  01D120
C5  2E  96  46  FF  03  EB  00  00  96  46  C7  00  01  05  C7  --  01D130
03  E7  28  3E  C5  2E  5B  7D  05  3B  96  46  8B  E7  FA  3E  --  01D140
E8  02  36  C4  2E  E0  75  9B  46  3A  E4  2A  05  8A  96  7E  --  01D150
E7  22  1E  8E  2E  E7  20  3E  03  2E  04  FF  26  3C  8B  26  --  01D160
3B  48  05  8B  E7  FA  3E  C5  2E  05  88  E4  2A  9B  46  8A  --  01D170
1E  8E  2E  E7  28  3E  03  2E  47  96  7E  8B  B7  74  96  46  --  01D180
05  88  96  7E  03  E7  28  3E  C5  2E  E4  2A  05  8A  E7  2A  --  01D190
CB  5E  5F  C9  0D  FF  E7  FA  3E  C5  2E  D2  EB  96  46  FF  --  01D1A0
02  55  8B  05  8B  E6  C8  3E  C5  2E  00  00  04  C8  57  56  --  01D1B0
8B  E7  BE  3E  C5  2E  02  55  89  05  89  E7  BE  3E  C5  2E  --  01D1C0
C5  26  E7  BE  36  C4  2E  00  A0  E9  03  75  05  0B  02  45  --  01D1D0
80  3C  C5  26  E7  BE  36  C4  2E  0E  74  10  18  7D  80  3C  --  01D1E0
FF  0E  75  FF  3D  C5  E7  BE  3E  C5  2E  4D  75  15  18  7D  --  01D1F0
BE  3E  C5  2E  04  C4  83  00  64  4E  E3  9A  0C  75  01  FE  --  01D200
C4  83  00  64  4E  E3  9A  10  75  FF  12  75  FF  3D  C5  E7  --  01D210
2E  15  75  15  18  7D  80  3C  C5  26  E7  BE  36  C4  2E  04  --  01D220
64  4E  E3  9A  14  75  FF  16  75  FF  3D  C5  E7  BE  3E  C5  --  01D230
46  89  02  55  8B  05  8B  E7  BE  3E  C5  2E  04  C4  83  00  --  01D240
02  55  8B  05  8B  3D  C5  E7  BE  3E  C5  2E  FE  56  89  FC  --  01D250
FC  76  FF  FE  76  FF  02  55  89  05  89  E7  BE  3E  C5  2E  --  01D260
E6  C8  3E  C5  2E  FF  51  E9  04  C4  83  00  64  4E  E3  9A  --  01D270
55  57  56  CB  5E  5F  C9  00  00  02  45  C7  00  00  05  C7  --  01D280
16  3E  C5  2E  1D  74  00  3D  83  E6  C4  3E  C5  2E  EC  8B  --  01D290
9A  02  C4  83  00  1C  E2  9D  9A  00  6A  00  00  05  C7  E8  --  01D2A0
3D  83  E7  48  3E  C5  2E  00  1C  D8  38  9A  00  34  2E  9D  --  01D2B0
5E  EB  9A  00  1C  C5  11  9A  00  1C  E1  57  9A  05  74  00  --  01D2C0
54  47  78  9A  00  2C  6A  32  9A  00  1C  B5  E1  9A  00  44  --  01D2D0
E7  B6  3E  C5  2E  00  00  02  C8  57  56  CB  5E  5F  C9  00  --  01D2E0
8D  16  1B  74  00  3D  83  E7  60  3E  C5  2E  00  00  05  C7  --  01D2F0
08  C4  83  00  64  40  D0  9A  00  DA  68  02  6A  50  FE  46  --  01D300
C5  2E  50  FE  46  8D  16  00  00  05  C7  E7  60  3E  C5  2E  --  01D310
83  00  64  40  D0  9A  01  F6  68  03  6A  35  FF  E6  B0  3E  --  01D320
00  1C  E0  E7  9A  FE  76  FF  0D  74  00  FE  7E  83  0A  C4  --  01D330
DC  3E  C5  2E  0D  FF  E6  B0  3E  C5  2E  3D  EB  02  C4  83  --  01D340
36  FF  2E  35  FF  E6  B0  3E  C5  2E  19  74  00  3D  80  E6  --  01D350
2E  06  C4  83  00  5C  97  1E  9A  E8  1A  36  FF  2E  E8  1C  --  01D360
23  6E  9A  00  1C  C3  DE  9A  00  00  05  C7  E6  B4  3E  C5  --  01D370
00  FE  46  C7  00  00  1A  C8  57  56  CB  5E  5F  C9  00  64  --  01D380
0C  76  FF  50  FC  46  8D  16  00  01  05  C7  0A  7E  C5  00  --  01D390

74  00  FC  7E  83  08  C4  83  00  1C  CC  1E  9A  0A  76  FF  --  01D3A0
05  8B  E8  1E  3E  C5  2E  00  1C  C8  DE  9A  02  FA  E9  03  --  01D3B0
6A  00  6A  00  6A  00  6A  00  6A  00  6A  3A  74  00  01  3D  --  01D3C0
00  5C  A2  86  9A  E8  22  36  FF  2E  E8  24  36  FF  2E  00  --  01D3D0
00  6A  00  6A  13  74  00  FE  7E  83  FE  46  89  10  C4  83  --  01D3E0
2E  0A  C4  83  00  64  28  52  9A  FE  76  FF  00  6A  00  6A  --  01D3F0
2B  46  68  1F  75  00  01  3D  05  8B  E8  1E  3E  C5  01  FE  --  01D400
2E  E8  28  36  FF  2E  E8  2A  36  FF  2E  E8  2C  36  FF  2E  --  01D410
54  C8  76  9A  0A  C4  83  00  64  3A  84  9A  E8  26  36  FF  --  01D420
```

137

```
E7 0C 36 FF 2E E7 0E 36 FF 2E 00 64 22 FA 9A 00 -- 01D430
FF 2E E8 2C 36 FF 2E 2B 46 68 00 6A 00 6A 00 6A -- 01D440
FF 2E E8 30 36 FF 2E 04 6A 0A 6A 04 6A E8 2A 36 -- 01D450
00 64 23 34 9A 1A C4 83 00 5C A6 44 9A E8 2E 36 -- 01D460
00 6A 00 6A 21 74 00 01 3D 05 8B E8 1E 3E C5 2E -- 01D470
36 FF 2E E8 34 36 FF 2E 00 6A 00 6A 00 6A 00 6A -- 01D480
3E C5 2E FE 46 89 10 C4 83 00 5C A2 86 9A E8 32 -- 01D490
FF E9 00 1C C4 B9 9A 08 75 FF FF 3D 05 8B E8 36 -- 01D4A0
2E E4 2A 05 8A E7 20 3E C5 2E 00 1C CB 2D 9A 01 -- 01D4B0
2E E4 2A 05 8A E7 28 3E C5 2E 05 89 E7 1C 3E C5 -- 01D4C0
3E C5 2E 05 8B E7 54 3E C5 2E 05 89 E7 24 3E C5 -- 01D4D0
E8 3A 36 FF 2E E8 3C 36 FF 2E 57 56 05 89 E7 50 -- 01D4E0
FF 6A 9A 01 00 68 E8 12 36 FF 2E E8 14 36 FF 2E -- 01D4F0
05 C7 E6 B4 3E C5 2E 00 1C C5 11 9A 5E 5F 00 5C -- 01D500
08 3E C5 2E E8 46 89 05 8B E7 08 3E C5 2E 00 00 -- 01D510
C5 2E 00 01 05 C7 E8 3E 3E C5 2E 00 01 05 C7 E7 -- 01D520
6A 09 6A 50 FE 46 8D 16 15 74 00 3D 83 E6 C0 3E -- 01D530
46 8D 16 13 EB 0A C4 83 00 64 40 D0 9A 6F 6A 03 -- 01D540
0A C4 83 00 64 40 D0 9A 6F 6A 03 6A 16 6A 50 FE -- 01D550
2E 00 14 DB 64 9A 05 74 00 3D 83 E8 42 3E C5 2E -- 01D560
FF 2E 12 6A 00 E3 E9 03 74 00 3D 83 E8 46 3E C5 -- 01D570
36 FF 2E E7 12 36 FF 2E E8 4A 36 FF 2E E8 4C 36 -- 01D580
54 36 FF 2E 12 6A 0A C4 83 00 5C ED 6E 9A E7 10 -- 01D590
E8 4E 36 FF 2E E8 50 36 FF 2E E8 52 36 FF 2E E8 -- 01D5A0
01 05 C7 E8 46 3E C5 2E 0A C4 83 00 5C ED 6E 9A -- 01D5B0
36 FF 2E E7 0C 36 FF 2E E7 0E 36 FF 2E 66 6A 00 -- 01D5C0
6A 0A C4 83 00 5C ED 6E 9A E8 56 36 FF 2E E8 58 -- 01D5D0
E8 5C 36 FF 2E E7 10 36 FF 2E E7 12 36 FF 2E 12 -- 01D5E0
6A 12 6A 0A C4 83 00 5C ED 6E 9A E8 5A 36 FF 2E -- 01D5F0
2E E7 10 36 FF 2E E7 12 36 FF 2E 01 6A 01 01 FE -- 01D600
C4 83 00 5C 93 FD 9A E7 0C 36 FF 2E E7 0E 36 FF -- 01D610
0A C4 83 00 5C ED 6E 9A 50 EA 46 8D 16 50 52 0C -- 01D620
8D 16 04 C4 83 00 5C 60 DD 9A EA 76 FF EC 76 FF -- 01D630
E6 C0 3E C5 2E 04 C4 83 00 5C 94 D5 9A 50 EA 46 -- 01D640
44 5A FD 9A 05 EB 00 4C 02 61 9A 07 75 00 3D 83 -- 01D650
B8 E7 F6 36 C4 2E 00 01 05 C7 E7 F2 3E C5 2E 00 -- 01D660
44 60 DD 9A 05 89 E7 F6 3E C5 2E 04 2B 26 00 01 -- 01D670
74 00 E8 7E 83 1D 74 00 3D 83 E6 C0 3E C5 2E 00 -- 01D680
E6 76 FF 00 00 E6 46 C7 05 EB 00 01 E6 46 C7 07 -- 01D690
47 78 9A 00 44 5F EB 9A 02 C4 83 00 14 55 74 9A -- 01D6A0
36 FF 2E 57 56 EC 8B 55 57 56 CB 5E 5F C9 00 54 -- 01D6B0
0C 36 FF 2E E7 0E 36 FF 2E E8 2A 36 FF 2E E8 2C -- 01D6C0
60 36 FF 2E 57 56 5E 5F 00 5C FE EC 9A 66 6A E7 -- 01D6D0
E8 4A 36 FF 2E E8 4C 36 FF 2E E8 5E 36 FF 2E E8 -- 01D6E0
E8 64 36 FF 2E 57 56 5E 5F 00 5C FE EC 9A 12 6A -- 01D6F0
6A E7 10 36 FF 2E E7 12 36 FF 2E E8 62 36 FF 2E -- 01D700
2E E8 68 36 FF 2E 57 56 5E 5F 00 5C FE EC 9A 12 -- 01D710
12 6A E8 6A 36 FF 2E E8 6C 36 FF 2E E8 66 36 FF -- 01D720
FF 2E E8 70 36 FF 2E 57 56 5E 5F 00 5C FE EC 9A -- 01D730

9A 12 6A E8 52 36 FF 2E E8 54 36 FF 2E E8 6E 36 -- 01D740
36 FF 2E E8 74 36 FF 2E 57 56 5E 5F 00 5C FE EC -- 01D750
EC 9A 12 6A E8 4E 36 FF 2E E8 50 36 FF 2E E8 72 -- 01D760
76 36 FF 2E E8 78 36 FF 2E 57 56 5E 5F 00 5C FE -- 01D770
FE EC 9A 12 6A E8 7A 36 FF 2E E8 7C 36 FF 2E E8 -- 01D780
E8 7E 36 FF 2E E8 80 36 FF 2E 57 56 5E 5F 00 5C -- 01D790
FE EC 9A 24 00 68 35 FF 02 75 FF E7 04 3E C5 2E -- 01D7A0
E8 82 36 FF 2E E8 84 36 FF 2E 57 56 5E 5F 00 5C -- 01D7B0
FE EC 9A 02 00 68 E8 12 36 FF 2E E8 14 36 FF 2E -- 01D7C0
E8 86 36 FF 2E E8 88 36 FF 2E 57 56 5E 5F 00 5C -- 01D7D0
```

```
FE EC 9A 01 00 68 E7 28 36 FF 2E E7 2A 36 FF 2E -- 01D7E0
E8 8A 36 FF 2E E8 8C 36 FF 2E 57 56 5E 5F 00 5C -- 01D7F0
9A 01 00 68 E7 20 36 FF 2E E7 22 36 FF 2E 01 FE -- 01D800
36 FF 2E E8 90 36 FF 2E 57 56 5E 5F 00 5C FE EC -- 01D810
9A 02 4E 68 E8 92 36 FF 2E E8 94 36 FF 2E E8 8E -- 01D820
3E C5 2E 05 8B E7 08 3E C5 2E 5E 5F 00 5C FE EC -- 01D830
E8 9A 3E C5 2E 05 8B E8 46 3E C5 2E 05 89 E8 96 -- 01D840
05 89 E8 9E 3E C5 2E 05 8B E8 A2 3E C5 2E 05 89 -- 01D850
C5 2E 05 89 E8 A6 3E C5 2E 05 8B E7 54 3E C5 2E -- 01D860
02 3E C5 2E 05 89 E8 AA 3E C5 2E 05 8B E7 FA 3E -- 01D870
8B E8 B6 3E C5 2E 05 89 E8 AE 3E C5 2E 05 8B E8 -- 01D880
05 D9 9B E8 BE 3E C5 2E 05 89 E8 B2 3E C5 2E 05 -- 01D890
00 3D 83 E7 B6 3E C5 2E 1D D9 9B E8 BA 3E C5 2E -- 01D8A0
9B E8 C2 3E C5 2E 05 DD 9B E7 A6 3E C5 2E 22 74 -- 01D8B0
9B E8 C6 3E C5 2E 05 DD 9B E7 AA 3E C5 2E 1D DD -- 01D8C0
C2 3E C5 2E 05 D9 9B E8 CA 3E C5 2E 20 EB 1D DD -- 01D8D0
C6 3E C5 2E 05 D9 9B E7 AE 3E C5 2E 1D DD 9B E8 -- 01D8E0
E8 CE 3E C5 2E 05 8B E7 F2 3E C5 2E 1D DD 9B E8 -- 01D8F0
FF 2E 57 56 EC 8B 55 57 56 CB 5E 5F C9 9B 05 89 -- 01D900
36 FF 2E E8 60 36 FF 2E E8 4A 36 FF 2E E8 4C 36 -- 01D910
36 FF 2E 57 56 5E 5F 00 5C FE EC 9A 12 6A E8 5E -- 01D920
6E 36 FF 2E E8 70 36 FF 2E E8 52 36 FF 2E E8 54 -- 01D930
04 3E C5 2E 57 56 5E 5F 00 5C FE EC 9A 12 6A E8 -- 01D940
E8 7E 36 FF 2E E8 80 36 FF 2E 35 FF 02 75 FF E7 -- 01D950
14 36 FF 2E 57 56 5E 5F 00 5C FE EC 9A 24 00 68 -- 01D960
E8 82 36 FF 2E E8 84 36 FF 2E E8 12 36 FF 2E E8 -- 01D970
2A 36 FF 2E 57 56 5E 5F 00 5C FE EC 9A 02 00 68 -- 01D980
E8 86 36 FF 2E E8 88 36 FF 2E E7 28 36 FF 2E E7 -- 01D990
22 36 FF 2E 57 56 5E 5F 00 5C FE EC 9A 01 00 68 -- 01D9A0
E8 8A 36 FF 2E E8 8C 36 FF 2E E7 20 36 FF 2E E7 -- 01D9B0
8B E8 AE 3E C5 2E 5E 5F 00 5C FE EC 9A 01 00 68 -- 01D9C0
2E 05 8B E8 AA 3E C5 2E 05 89 E8 02 3E C5 2E 05 -- 01D9D0
3E C5 2E 05 8B E8 CE 3E C5 2E 05 89 E7 FA 3E C5 -- 01D9E0
86 C7 00 01 4C C8 57 56 CB 5E 5F C9 05 89 E7 F2 -- 01D9F0
58 86 C7 00 01 05 C7 0A 7E C5 00 01 FE C2 01 FE -- 01DA00
2E 00 54 C8 1C 9A 00 00 05 C7 0E 7E C5 00 00 FF -- 01DA10
9A 0A 76 FF 0C 76 FF 20 74 00 3D 83 E6 C4 3E C5 -- 01DA20
C5 0A 74 C0 0B FF 58 86 89 04 C4 83 00 1C D9 98 -- 01DA30
3D 83 E7 48 3E C5 2E 09 66 E9 00 01 05 C7 0E 7E -- 01DA40
02 45 8B E6 C8 3E C5 2E 00 1C E1 57 9A 05 74 00 -- 01DA50
01 3D 05 8B E7 F2 3E C5 2E 01 08 E9 03 74 05 0B -- 01DA60
B4 86 C7 5F 75 00 3D 83 E7 08 3E C5 2E 0A 74 00 -- 01DA70
2E FE B6 86 FF 04 EB 00 01 FE B6 86 C7 00 00 FE -- 01DA80
FE B6 B6 8B 2F 7F 05 3B FE B6 86 8B E7 54 3E C5 -- 01DA90
FE B6 BE 8B E8 3C 06 8E 2E E8 3A 36 03 2E E6 D1 -- 01DAA0
3B 26 05 8B E8 14 1E 8E 2E E8 12 3E 03 2E E7 D1 -- 01DAB0
00 FE B4 BE 83 C0 EB 00 01 FE B4 86 C7 C8 74 04 -- 01DAC0
B6 3E C5 2E 08 D3 E9 00 01 05 C7 0E 7E C5 0A 75 -- 01DAD0

FF 2E E7 12 36 FF 2E 12 6A 12 6A 00 00 05 C7 E8 -- 01DAE0
ED 6E 9A E8 4A 36 FF 2E E8 4C 36 FF 2E E7 10 36 -- 01DAF0
6A 36 FF 2E E8 6C 36 FF 2E 50 52 0A C4 83 00 5C -- 01DB00
E8 50 36 FF 2E 12 6A 0A C4 83 00 5C ED 6E 9A E8 -- 01DB10
9A E8 52 36 FF 2E E8 54 36 FF 2E E8 4E 36 FF 2E -- 01DB20
FF 2E E8 50 36 FF 2E 01 6A 0A C4 83 00 5C ED 6E -- 01DB30
94 FB 9A E7 0C 36 FF 2E E7 0E 36 FF 2E E8 4E 36 -- 01DB40
18 74 00 FF 58 BE 83 FF 58 86 89 0A C4 83 00 5C -- 01DB50
2E 08 40 E9 02 C4 83 00 1C E0 E7 9A FF 58 B6 FF -- 01DB60
00 05 C7 E8 D2 3E C5 2E 00 01 05 C7 E8 B6 3E C5 -- 01DB70
E8 94 36 FF 2E 57 56 02 05 C6 E8 D6 3E C5 2E 00 -- 01DB80
```

139

EP 0 533 348 A2

```
5F  00  8C  00  02  9A  02  4E  68  00  6A  E8  92  36  FF  2E  --  01DB90
D9  9B  E8  DA  3E  C5  2E  05  D9  9B  E6  F0  3E  C5  2E  5E  --  01DBA0
9B  E8  DA  3E  C5  2E  05  D9  9B  E6  F8  3E  C5  2E  15  5D  --  01DBB0
07  DF  E9  03  75  00  3D  83  E8  B6  3E  C5  2E  11  5D  D9  --  01DBC0
00  64  4E  A1  9A  50  40  05  8B  E7  54  3E  C5  2E  24  6A  --  01DBD0
68  0E  75  C2  0B  FE  C8  96  89  FE  C6  86  89  04  C4  83  --  01DBE0
FF  57  56  07  B2  E9  02  C4  83  00  1C  E0  E7  9A  10  6D  --  01DBF0
75  FF  E7  04  3E  C5  2E  FE  C6  B6  FF  FE  C8  B6  01  FE  --  01DC00
9A  50  24  C7  6B  47  3C  8B  E7  54  36  C5  2E  35  FF  02  --  01DC10
86  FF  04  EB  00  00  FE  C4  86  C7  5E  5F  00  5C  FE  EC  --  01DC20
E9  03  7E  05  3B  FE  C4  86  8B  E7  54  3E  C5  2E  FE  C4  --  01DC30
C8  9E  8E  FE  C6  BE  03  F8  8B  24  FE  C4  86  6B  00  F6  --  01DC40
FA  8B  24  FE  C4  96  6B  E4  2A  0B  45  88  00  FF  B8  FE  --  01DC50
C4  96  6B  E4  2A  09  45  88  FE  C8  9E  8E  FE  C6  BE  03  --  01DC60
2A  07  45  88  FE  C8  9E  8E  FE  C6  BE  03  FA  8B  24  FE  --  01DC70
FE  C8  9E  8E  FE  C6  BE  03  FA  8B  24  FE  C4  96  6B  E4  --  01DC80
9E  8E  FE  C6  BE  03  F8  8B  24  FE  C4  86  6B  05  45  88  --  01DC90
24  FE  C4  96  6B  E4  2A  0A  45  88  FE  C4  86  8B  FE  C8  --  01DCA0
6B  E4  2A  08  45  88  FE  C8  9E  8E  FE  C6  BE  03  FA  8B  --  01DCB0
45  88  FE  C8  9E  8E  FE  C6  BE  03  FA  8B  24  FE  C4  96  --  01DCC0
9E  8E  FE  C6  BE  03  FA  8B  24  FE  C4  96  6B  E4  2A  06  --  01DCD0
FE  C6  BE  03  F8  8B  24  FE  C4  86  6B  04  45  88  FE  C8  --  01DCE0
BE  03  F8  8B  24  FE  C4  86  6B  03  05  C6  FE  C8  9E  8E  --  01DCF0
6B  E4  2A  03  45  88  FE  C4  86  8B  FE  C8  9E  8E  FE  C6  --  01DD00
45  88  FE  C8  9E  8E  FE  C6  BE  03  FA  8B  24  FE  C4  96  --  01DD10
9E  8E  FE  C6  BE  03  FA  8B  24  FE  C4  96  6B  E4  2A  02  --  01DD20
00  3D  83  E7  08  3E  C5  2E  FE  F6  E9  01  45  88  FE  C8  --  01DD30
E7  12  36  FF  2E  02  6A  01  6A  12  6A  00  90  E9  03  75  --  01DD40
9A  E7  0C  36  FF  2E  E7  0E  36  FF  2E  E7  10  36  FF  2E  --  01DD50
9A  50  FF  34  86  8D  16  50  52  0C  C4  83  00  5C  93  FD  --  01DD60
89  FF  36  96  8B  FF  34  86  8B  0A  C4  83  00  5C  ED  6E  --  01DD70
35  FF  E7  50  3E  C5  2E  00  6A  FF  32  96  89  FF  30  86  --  01DD80
B6  FF  FE  C2  B6  FF  FE  C6  B6  FF  FE  C8  B6  FF  00  6A  --  01DD90
86  89  10  C4  83  00  64  43  70  9A  FF  30  B6  FF  FF  32  --  01DDA0
83  00  1C  E0  E7  9A  FF  58  B6  FF  0F  74  C0  0B  FF  58  --  01DDB0
00  5C  94  D5  9A  50  FF  34  86  8D  16  05  EC  E9  02  C4  --  01DDC0
A2  3E  C5  2E  05  8B  E7  24  3E  C5  2E  34  EB  04  C4  83  --  01DDD0
C6  86  03  24  05  6B  E8  A2  3E  C5  2E  24  6A  05  89  E8  --  01DDE0
DE  36  FF  2E  E8  E0  36  FF  2E  50  52  FE  C8  96  8B  FE  --  01DDF0
E8  7C  36  FF  2E  0A  C4  83  00  5C  ED  6E  9A  E8  01  FE  --  01DE00
3E  C5  2E  04  C4  83  00  5C  D3  78  9A  E8  7A  36  FF  2E  --  01DE10
12  6A  00  03  05  C7  E8  E6  3E  C5  2E  61  05  C6  E8  E2  --  01DE20
2E  E8  7C  36  FF  2E  E8  D2  36  FF  2E  E8  D4  36  FF  2E  --  01DE30
8D  9A  E7  0C  36  FF  2E  E7  0E  36  FF  2E  E8  7A  36  FF  --  01DE40
36  FF  2E  E8  EC  36  FF  2E  50  52  0C  C4  83  00  5C  94  --  01DE50
83  E8  EE  3E  C5  2E  0A  C4  83  00  5C  ED  6E  9A  E8  EA  --  01DE60
00  1C  E0  E7  9A  35  FF  E8  EE  3E  C5  2E  12  74  00  3D  --  01DE70

02  55  8B  05  8B  E8  EA  3E  C5  2E  05  2D  E9  02  C4  83  --  01DE80
00  01  FF  5A  86  C7  02  55  89  05  89  E8  F2  3E  C5  2E  --  01DE90
2E  E8  94  36  FF  2E  E8  DE  36  FF  2E  E8  E0  36  FF  2E  --  01DEA0
0A  C4  83  00  5C  48  F8  9A  FF  5A  B6  FF  E8  92  36  FF  --  01DEB0
9A  FF  58  B6  FF  0F  74  00  FF  58  BE  83  FF  58  86  89  --  01DEC0
83  E7  08  3E  C5  2E  04  D9  E9  02  C4  83  00  1C  E0  E7  --  01DED0
D5  D8  9A  50  FF  60  86  8D  16  00  A2  E9  03  75  00  3D  --  01DEE0
0C  36  FF  2E  E7  0E  36  FF  2E  66  6A  04  C4  83  00  1C  --  01DEF0
6A  0A  C4  83  00  5C  ED  6E  9A  50  FE  CA  86  8D  16  E7  --  01DF00
FF  1E  86  8D  16  E7  10  36  FF  2E  E7  12  36  FF  2E  12  --  01DF10
16  50  FF  7E  86  8D  16  0A  C4  83  00  5C  ED  6E  9A  50  --  01DF20
9A  E8  F6  36  FF  2E  E8  F8  36  FF  2E  50  FE  CA  86  8D  --  01DF30
```

140

```
16  00  6A  00  6A  00  6A  00  6A  0C  C4  83  00  5C  4A  15  --  01DF40
9A  E8  92  36  FF  2E  E8  94  36  FF  2E  50  FF  60  86  8D  --  01DF50
00  FF  58  BE  83  FF  58  86  89  10  C4  83  00  5C  48  60  --  01DF60
32  E9  02  C4  83  00  1C  E0  E7  9A  FF  58  B6  FF  0F  74  --  01DF70
2E  00  01  FF  52  86  C7  06  EB  00  02  FF  52  86  C7  04  --  01DF80
05  89  E7  BE  3E  C5  2E  02  55  8B  05  8B  E6  C8  3E  C5  --  01DF90
45  8B  E7  BE  3E  C5  2E  FF  52  86  FF  04  EB  02  55  89  --  01DFA0
8A  3D  C5  E7  BE  3E  C5  2E  03  D7  E9  03  75  05  0B  02  --  01DFB0
02  55  8B  05  8B  E7  BE  3E  C5  2E  2A  EB  E4  2A  18  45  --  01DFC0
E7  BE  3E  C5  2E  38  EB  F8  56  89  F6  46  89  00  1A  05  --  01DFD0
23  EB  F8  56  89  F6  46  89  00  1A  05  02  55  8B  05  8B  --  01DFE0
21  A7  FF  2E  D8  8B  E0  D1  1B  77  00  08  3D  00  0D  2D  --  01DFF0
33  D2  33  D2  33  D1  FB  D2  33  D2  33  D1  E6  D2  01  FE  --  01E000
7E  C5  05  89  F6  7E  C5  FF  52  86  8B  D1  FB  D2  33  D2  --  01E010
FF  4E  86  89  0A  45  8B  F6  7E  C5  00  00  32  45  C7  F6  --  01E020
52  FE  C8  96  8B  FE  C6  86  03  24  FF  4E  86  6B  24  6A  --  01E030
00  5C  ED  6E  9A  50  00  0C  05  F6  46  8B  F8  76  FF  50  --  01E040
E7  BE  3E  C5  2E  FF  FE  0A  45  C7  F6  7E  C5  0A  C4  83  --  01E050
00  6A  00  6A  00  6A  00  D7  E9  E4  2A  18  45  8A  3D  C5  --  01E060
50  00  1A  05  05  8B  02  75  FF  E7  BE  3E  C5  2E  00  6A  --  01E070
83  00  5C  47  EE  9A  E8  92  36  FF  2E  E8  94  36  FF  2E  --  01E080
6A  00  6A  00  6A  00  6A  00  CB  E9  FF  58  86  89  10  C4  --  01E090
C5  2E  10  75  FF  12  75  FF  3D  C5  E7  BE  3E  C5  2E  00  --  01E0A0
E7  BE  3E  C5  2E  0C  75  FF  0E  75  FF  3D  C5  E7  BE  3E  --  01E0B0
FF  2E  E8  94  36  FF  2E  50  00  1A  05  05  8B  02  75  FF  --  01E0C0
E9  FF  58  86  89  18  C4  83  00  5C  47  C8  9A  E8  92  36  --  01E0D0
89  F6  7E  C5  0A  45  8B  3D  C5  E7  BE  3E  C5  2E  00  82  --  01E0E0
75  FF  16  75  FF  3D  C5  E7  BE  3E  C5  2E  01  6A  08  45  --  01E0F0
C5  2E  10  75  FF  12  75  FF  3D  C5  E7  BE  3E  C5  2E  14  --  01E100
E7  BE  3E  C5  2E  0C  75  FF  0E  75  FF  3D  C5  E7  BE  3E  --  01E110
FF  2E  E8  94  36  FF  2E  50  00  1A  05  05  8B  02  75  FF  --  01E120
EB  FF  58  86  89  16  C4  83  00  5C  F2  B7  9A  E8  92  36  --  01E130
A7  FF  2E  D8  8B  E0  D1  1B  77  00  08  3D  00  0D  2D  23  --  01E140
D3  82  D3  82  D3  82  D2  B7  D3  82  D3  82  D2  88  D3  70  --  01E150
9A  FF  58  B6  FF  0F  74  00  FF  58  BE  83  D3  00  D3  82  --  01E160
00  00  FF  50  86  C7  02  3B  E9  02  C4  83  00  1C  E0  E7  --  01E170
BE  3E  C5  2E  02  55  8B  05  8B  3D  C5  E7  BE  3E  C5  2E  --  01E180
00  01  BE  05  75  00  FF  50  BE  83  02  55  89  05  89  E7  --  01E190
05  74  05  0B  02  45  8B  E7  BE  3E  C5  2E  F6  2B  02  EB  --  01E1A0
C5  2E  FD  E9  E9  03  75  C6  23  C0  2B  02  EB  00  01  B8  --  01E1B0
BE  3E  C5  2E  2A  EB  E4  2A  18  45  8A  3D  C5  E7  BE  3E  --  01E1C0
EB  F8  56  89  F6  46  89  00  1A  05  02  55  8B  05  8B  E7  --  01E1D0
46  89  00  1A  05  02  55  8B  05  8B  E7  BE  3E  C5  2E  38  --  01E1E0
E0  D1  1B  77  00  08  3D  00  0D  2D  23  EB  F8  56  89  F6  --  01E1F0
FF  D4  37  D4  37  D3  EA  D4  25  A7  FF  2E  D8  8B  01  FE  --  01E200
45  8B  F6  7E  C5  D3  FF  D4  37  D4  37  D4  37  D4  37  D3  --  01E210

FF  68  E9  00  01  FF  50  86  C7  09  74  FF  4E  86  3B  0A  --  01E220
00  32  45  C7  F6  7E  C5  05  89  F6  7E  C5  FF  52  86  8B  --  01E230
FE  C8  96  8B  FE  C6  86  03  24  FF  4E  86  6B  24  6A  00  --  01E240
5C  ED  6E  9A  50  00  0C  05  F6  46  8B  F8  76  FF  50  52  --  01E250
BE  3E  C5  2E  FF  FE  0A  45  C7  F6  7E  C5  0A  C4  83  00  --  01E260
E7  BE  3E  C5  2E  00  C7  E9  E4  2A  18  45  8A  3D  C5  E7  --  01E270
FF  2E  E8  94  36  FF  2E  50  00  1A  05  05  8B  02  75  FF  --  01E280
E9  FF  58  86  89  08  C4  83  00  5C  48  01  9A  E8  92  36  --  01E290
2E  10  75  FF  12  75  FF  3D  C5  E7  BE  3E  C5  2E  00  C3  --  01E2A0
BE  3E  C5  2E  0C  75  FF  0E  75  FF  3D  C5  E7  BE  3E  C5  --  01E2B0
2E  E8  94  36  FF  2E  50  00  1A  05  05  8B  02  75  FF  E7  --  01E2C0
FF  58  86  89  10  C4  83  00  5C  47  DB  9A  E8  92  36  FF  --  01E2D0
F6  7E  C5  0A  45  8B  3D  C5  E7  BE  3E  C5  2E  00  82  E9  --  01E2E0
```

141

```
FF  16  75  FF  3D  C5  E7  BE  3E  C5  2E  00  6A  08  45  89  --  01E2F0
2E  10  75  FF  12  75  FF  3D  C5  E7  BE  3E  C5  2E  14  75  --  01E300
BE  3E  C5  2E  0C  75  FF  0E  75  FF  3D  C5  E7  BE  3E  C5  --  01E310
2E  E8  94  36  FF  2E  50  00  1A  05  05  8B  02  75  FF  E7  --  01E320
FF  58  86  89  16  C4  83  00  5C  F2  B7  9A  E8  92  36  FF  --  01E330
FF  2E  D8  8B  E0  D1  1B  77  00  08  3D  00  0D  2D  23  EB  --  01E340
81  D5  81  D5  81  D4  BE  D5  81  D5  81  D4  97  D5  6F  A7  --  01E350
FF  58  B6  FF  0E  74  00  FF  58  BE  83  D4  FF  D5  81  D5  --  01E360
C5  E7  BE  3E  C5  2E  3D  EB  02  C4  83  00  1C  E0  E7  9A  --  01E370
02  55  89  05  89  E7  BE  3E  C5  2E  02  55  8B  05  8B  3D  --  01E380
49  0B  9A  E8  92  36  FF  2E  E8  94  36  FF  2E  FE  05  E9  --  01E390
9A  E8  EA  36  FF  2E  E8  EC  36  FF  2E  04  C4  83  00  5C  --  01E3A0
8B  55  57  56  CB  5E  5F  C9  9B  04  C4  83  00  5C  94  D5  --  01E3B0
00  02  9A  46  6A  00  6A  0A  76  FF  0C  76  FF  57  56  EC  --  01E3C0
45  C6  0A  7E  C5  00  01  05  C7  0A  7E  C5  5E  5F  00  8C  --  01E3D0
00  06  45  C7  0A  7E  C5  03  05  45  C6  0A  7E  C5  01  04  --  01E3E0
D9  9B  0A  7E  C5  22  55  D9  9B  0A  7E  C5  EE  D9  9B  00  --  01E3F0
7E  C5  26  55  D9  9B  0A  7E  C5  EE  D9  9B  0A  5D  01  FE  --  01E400
7E  C5  11  45  D9  9B  E8  DA  3E  C5  2E  0E  5D  D9  9B  0A  --  01E410
DA  3E  C5  2E  12  5D  D9  9B  0A  7E  C5  2A  55  D9  9B  0A  --  01E420
9B  0A  7E  C5  2E  55  D9  9B  0A  7E  C5  15  45  D9  9B  E8  --  01E430
7E  C5  EE  D9  9B  00  00  1A  45  C7  0A  7E  C5  16  5D  D9  --  01E440
06  DD  2E  9B  32  5D  D9  9B  0A  7E  C5  36  55  D9  9B  0A  --  01E450
3A  5D  D9  9B  0A  7E  C5  3E  55  D9  9B  0A  7E  C5  E7  7C  --  01E460
C9  9B  02  44  45  C6  0A  7E  C5  00  43  45  C6  0A  7E  C5  --  01E470
46  C7  00  00  F6  46  C7  00  00  1C  C8  57  56  CB  5E  5F  --  01E480
C5  E7  BE  3E  C5  2E  F0  5E  D9  9B  EE  D9  9B  00  00  F4  --  01E490
3E  C5  2E  FE  56  89  FC  46  89  0E  55  8B  0C  45  8B  3D  --  01E4A0
FA  56  89  F8  46  89  12  55  8B  10  45  8B  3D  C5  E7  BE  --  01E4B0
5E  8E  F8  7E  03  02  E7  C1  4F  3D  8B  E8  FA  3E  C5  2E  --  01E4C0
48  05  8B  E8  FA  3E  C5  2E  EC  5E  D9  9B  05  D9  9B  FA  --  01E4D0
F8  7E  03  02  E7  C1  47  F6  7E  8B  4E  7C  F4  46  3B  48  --  01E4E0
7E  8B  E4  5E  DD  9B  EC  66  D8  9B  05  D9  9B  FA  5E  8E  --  01E4F0
4E  DC  9B  05  D9  9B  FE  5E  8E  FC  7E  03  02  E7  C1  F6  --  01E500
03  02  E7  C1  F6  7E  8B  F0  5E  D9  9B  F0  46  D8  9B  E4  --  01E510
FF  F4  46  FF  EC  5E  D9  9B  05  D9  9B  FA  5E  8E  F8  7E  --  01E520
DD  9B  EC  66  D8  9B  05  D9  9B  F8  7E  C5  A4  EB  F6  46  --  01E530
FC  7E  03  02  E7  C1  4F  3D  8B  E8  FA  3E  C5  2E  E4  5E  --  01E540
D9  9B  F0  46  D8  9B  E4  4E  DC  9B  05  D9  9B  FE  5E  8E  --  01E550
5C  ED  94  9A  E8  FE  1E  DC  2E  9B  F0  46  D9  9B  F0  5E  --  01E560
56  CB  5E  5F  C9  9B  C0  2B  02  EB  00  01  B8  05  76  00  --  01E570
C5  2E  00  00  05  C7  E7  48  3E  C5  2E  00  00  02  C8  57  --  01E580
2E  19  74  00  3D  80  E6  DC  3E  C5  2E  05  FF  E6  B0  3E  --  01E590
E9  06  36  FF  2E  E9  08  36  FF  2E  35  FF  E6  B0  3E  C5  --  01E5A0
3E  C5  2E  50  FE  46  8D  16  06  C4  83  00  5C  97  1E  9A  --  01E5B0

C4  83  00  64  40  D0  9A  01  F5  68  03  6A  35  FF  E6  B0  --  01E5C0
83  00  1C  E0  E7  9A  FE  76  FF  0D  74  00  FE  7E  83  0A  --  01E5D0
E6  E4  3E  C5  2E  05  8B  E6  B0  3E  C5  2E  36  EB  02  C4  --  01E5E0
E7  2C  3E  C5  2E  35  FF  E7  2C  3E  C5  2E  07  6A  05  89  --  01E5F0
F0  9A  08  C4  83  00  54  BA  52  9A  02  6A  35  FF  01  FE  --  01E600
CB  5E  5F  C9  00  01  05  C7  E6  C4  3E  C5  2E  00  34  42  --  01E610
E6  AE  36  FF  2E  50  FE  46  8D  16  00  00  02  C8  57  56  --  01E620
83  00  64  40  D0  9A  01  F8  68  04  6A  E6  AC  36  FF  2E  --  01E630
00  1C  E0  E7  9A  FE  76  FF  0D  74  00  FE  7E  83  0C  C4  --  01E640
8D  16  00  00  05  C7  E6  E4  3E  C5  2E  5F  EB  02  C4  83  --  01E650
9A  01  F6  68  03  6A  35  FF  E6  B0  3E  C5  2E  50  FE  46  --  01E660
FE  76  FF  0D  74  00  FE  7E  83  0A  C4  83  00  64  40  D0  --  01E670
FF  E6  B0  3E  C5  2E  2A  EB  02  C4  83  00  1C  E0  E7  9A  --  01E680
E6  B0  3E  C5  2E  19  74  00  3D  80  E6  DC  3E  C5  2E  0D  --  01E690
```

```
5C 97 1E 9A E9 0A 36 FF 2E E9 0C 36 FF 2E 35 FF -- 01E6A0
3E C5 2E EC 8B 55 57 56 CB 5E 5F C9 06 C4 83 00 -- 01E6B0
02 C4 83 00 1C E2 9D 9A 00 6A 00 00 05 C7 E8 16 -- 01E6C0
57 56 CB 5E 5F C9 00 1C D8 38 9A 00 34 2E 9D 9A -- 01E6D0
00 1A 05 02 55 8B 05 8B E7 BE 3E C5 2E EC 8B 55 -- 01E6E0
C5 E9 0E 3E C5 2E 02 55 89 05 89 E9 0E 3E C5 2E -- 01E6F0
C5 E9 0E 3E C5 2E 00 1C D6 9D 9A 00 30 45 C6 3D -- 01E700
08 45 89 C0 2B 3D C5 E9 0E 3E C5 2E 48 45 88 3D -- 01E710
0E 3E C5 2E E4 2A 07 45 88 3D C5 E9 0E 3E C5 2E -- 01E720
88 3D C5 E9 0E 3E C5 2E E4 2A 06 45 88 3D C5 E9 -- 01E730
E4 2A 04 45 88 3D C5 E9 0E 3E C5 2E E4 2A 05 45 -- 01E740
8B E7 DE 3E C5 2E 03 45 88 3D C5 E9 0E 3E C5 2E -- 01E750
E8 FA 3E C5 2E 0A 45 89 3D C5 E9 0E 3E C5 2E 05 -- 01E760
CB 5E 5F C9 46 45 89 3D C5 E9 0E 3E C5 2E 05 8B -- 01E770
05 74 00 3D 83 E7 58 3E C5 2E 00 00 46 C8 57 56 -- 01E780
16 1B 74 00 3D 83 E7 60 3E C5 2E 00 1C BC 87 9A -- 01E790
C4 83 00 64 40 D0 9A 00 DA 68 02 6A 50 C0 46 8D -- 01E7A0
C7 E7 14 3E C5 2E 00 00 05 C7 E7 60 3E C5 2E 08 -- 01E7B0
36 FF 2E E8 FC 36 FF 2E 50 C8 46 8D 16 00 00 05 -- 01E7C0
75 C0 0B C0 46 89 08 C4 83 00 5C F1 92 9A E8 FA -- 01E7D0
FF E7 E2 3E C5 2E 00 01 05 C7 E8 16 3E C5 2E 18 -- 01E7E0
05 8B E8 FA 3E C5 2E 02 C4 83 00 1C E2 9D 9A 35 -- 01E7F0
38 9A 00 01 05 C7 0A 7E C5 29 7D 00 03 3D 01 FE -- 01E800
FA 3E C5 2E 00 00 05 C7 E6 C4 3E C5 2E 00 1C D8 -- 01E810
06 33 E9 C0 2B 00 2C 6A 32 9A 05 74 00 3D 83 E8 -- 01E820
6A 00 6A 00 02 05 C7 0A 7E C5 25 74 00 C0 7E 83 -- 01E830
0A C4 83 00 64 28 52 9A C0 76 FF 00 6A 00 6A 00 -- 01E840
05 C7 0A 7E C5 06 08 E9 C0 46 8B 00 5C F2 1F 9A -- 01E850
00 1C AF 1A 9A 00 00 05 C7 E6 C4 3E C5 2E 00 01 -- 01E860
C4 83 00 64 4E A1 9A 04 6A 35 FF E8 FA 3E C5 2E -- 01E870
C2 0B 0E 55 89 0C 45 89 3D C5 E7 BE 3E C5 2E 04 -- 01E880
10 6D B8 02 C4 83 00 1C E0 E7 9A 10 6D 68 11 75 -- 01E890
64 4E A1 9A 04 6A 35 FF E8 FA 3E C5 2E 05 C0 E9 -- 01E8A0
55 89 10 45 89 3D C5 E7 BE 3E C5 2E 04 C4 83 00 -- 01E8B0
02 C4 83 00 1C E0 E7 9A 10 6D 68 11 75 C2 0B 12 -- 01E8C0
C8 46 8B 3D C5 E7 BE 3E C5 2E 05 8D E9 10 6D B8 -- 01E8D0
C5 2E 15 18 45 C6 3D C5 E7 BE 3E C5 2E 0A 45 89 -- 01E8E0
2E 04 C4 83 00 64 4E A1 9A 01 6A 35 FF E8 FA 3E -- 01E8F0
11 75 C2 0B 16 55 89 14 45 89 3D C5 E7 BE 3E C5 -- 01E900
42 E9 10 6D B8 02 C4 83 00 1C E0 E7 9A 10 6D 68 -- 01E910
C5 2E 14 75 FF 16 75 FF 3D C5 E7 BE 3E C5 2E 05 -- 01E920
E7 BE 3E C5 2E 10 75 FF 12 75 FF 3D C5 E7 BE 3E -- 01E930
0C C4 83 00 5C F2 37 9A 0C 75 FF 0E 75 FF 3D C5 -- 01E940
E2 46 89 04 C4 83 00 64 4E A1 9A 01 6A C8 76 FF -- 01E950

83 00 1C E0 E7 9A 10 6D 68 11 75 C2 0B E4 56 89 -- 01E960
46 8D 16 00 1C D8 F6 9A 04 EB E9 10 6D B8 02 C4 -- 01E970
2E 14 75 FF 16 75 FF 3D C5 E7 BE 3E C5 2E 50 E6 -- 01E980
BE 3E C5 2E 10 75 FF 12 75 FF 3D C5 E7 BE 3E C5 -- 01E990
75 FF E7 BE 3E C5 2E 0C 75 FF 0E 75 FF 3D C5 E7 -- 01E9A0
E2 76 FF E4 76 FF C8 76 FF 50 00 1A 05 05 8B 02 -- 01E9B0
12 3E C5 2E EC 46 D9 9B 1A C4 83 00 5C F1 09 9A -- 01E9C0
1D D9 9B E9 16 3E C5 2E F0 46 D9 9B 1D D9 9B E9 -- 01E9D0
F8 46 D9 9B 1D D9 9B E9 1A 3E C5 2E F4 46 D9 9B -- 01E9E0
46 6B F8 8B 26 FE 46 6B 1D D9 9B E9 1E 3E C5 2E -- 01E9F0
8B E7 BE 3E C5 2E C2 46 89 40 C7 03 18 FC 01 FE -- 01EA00
55 89 05 89 E9 0E 3E C5 2E 00 1A 05 02 55 8B 05 -- 01EA10
3D C5 E9 0E 3E C5 2E 05 D9 9B E9 12 3E C5 2E 02 -- 01EA20
0E 3E C5 2E 05 D9 9B E9 1A 3E C5 2E 34 5D D9 9B -- 01EA30
1E 3E C5 2E E9 1A 36 C4 2E 38 5D D9 9B 3D C5 E9 -- 01EA40
```

```
9B 3D C5 E9 0E 3E C5 2E 24 D8 26 9B 05 D9 9B E9 -- 01EA50
05 D9 9B E9 16 3E C5 2E E9 12 36 C4 2E 3C 5D D9 -- 01EA60
FF 40 5D D9 9B 3D C5 E9 0E 3E C5 2E 24 D8 26 9B -- 01EA70
89 D2 46 89 04 C4 83 00 64 4E A1 9A 01 6A C2 76 -- 01EA80
C4 83 00 1C E0 E7 9A 10 6D 68 11 75 C2 0B D4 56 -- 01EA90
DE 46 89 D4 56 8B D2 46 8B 03 BE E9 10 6D B8 02 -- 01EAA0
7E C5 C4 46 89 E4 2A C6 46 88 00 01 B8 E0 56 89 -- 01EAB0
2E BE 46 89 BC 46 89 C0 2B C7 46 88 98 05 8A E2 -- 01EAC0
05 8B E7 F2 3E C5 2E 28 74 00 3D 83 E6 C0 3E C5 -- 01EAD0
46 89 E4 2A 05 8A E7 20 3E C5 2E 0E 75 00 01 3D -- 01EAE0
EB BA 46 89 E4 2A 05 8A E7 28 3E C5 2E 18 EB BA -- 01EAF0
75 00 C6 7E 80 BA 46 89 05 8B E7 DE 3E C5 2E 0A -- 01EB00
EB 00 00 C4 46 C7 07 74 00 C4 7E 83 01 A5 E9 03 -- 01EB10
50 E2 46 8D 16 50 C6 46 8D 16 50 C7 46 8D 16 17 -- 01EB20
C2 E9 03 74 04 C7 7E 80 0C C4 83 00 2C FE 3D 9A -- 01EB30
D8 56 89 D6 46 89 E4 56 8B E2 46 8B BE 46 FF 00 -- 01EB40
00 C6 7E 80 CC 56 89 CA 46 89 E0 56 8B DE 46 8B -- 01EB50
05 89 CA 7E C5 00 26 05 E0 56 8B DE 46 8B 13 74 -- 01EB60
00 02 45 C7 00 00 05 C7 CA 7E C5 0C EB 02 55 89 -- 01EB70
45 88 CA 7E C5 BA 46 8B 04 04 45 C6 CA 7E C5 00 -- 01EB80
D6 7E C5 06 45 89 CA 7E C5 06 45 8B D6 7E C5 05 -- 01EB90
08 45 D9 9B D6 7E C5 08 45 89 CA 7E C5 18 45 8B -- 01EBA0
7E C5 0C 45 D9 9B D6 7E C5 0A 5D D9 9B CA 7E C5 -- 01EBB0
9B CA 7E C5 1A 45 D9 9B D6 7E C5 0E 5D D9 9B CA -- 01EBC0
5D D9 9B CA 7E C5 1E 45 D9 9B D6 7E C5 12 5D D9 -- 01EBD0
C5 1E 55 D9 9B CA 7E C5 26 45 D9 9B D6 7E C5 16 -- 01EBE0
22 5D D9 9B CA 7E C5 EE D9 9B 1A 5D D9 9B CA 7E -- 01EBF0
46 89 E4 56 8B E2 46 8B BC 46 FF 00 A2 E9 01 FE -- 01EC00
D0 56 89 CE 46 89 E0 56 8B DE 46 8B DC 56 89 DA -- 01EC10
C5 00 18 05 E0 56 8B DE 46 8B 13 74 00 C6 7E 80 -- 01EC20
00 00 05 C7 CE 7E C5 0C EB 02 55 89 05 89 CE 7E -- 01EC30
8A 01 C7 46 C6 04 75 02 C7 7E 80 00 00 02 45 C7 -- 01EC40
CE 7E C5 BA 46 8B 04 45 88 CE 7E C5 E4 2A C7 46 -- 01EC50
C5 06 45 89 CE 7E C5 06 45 8B DA 7E C5 05 45 88 -- 01EC60
DA 7E C5 10 5D D9 9B CE 7E C5 10 45 D9 9B DA 7E -- 01EC70
D9 9B DA 7E C5 14 5D D9 9B CE 7E C5 14 45 D9 9B -- 01EC80
0C 45 D9 9B DA 7E C5 08 5D D9 9B CE 7E C5 08 45 -- 01EC90
00 26 B8 05 75 04 C7 7E 80 0C 5D D9 9B CE 7E C5 -- 01ECA0
46 89 BC 46 8B FE 52 E9 DE 46 01 00 18 B8 03 EB -- 01ECB0
E6 46 89 D4 56 8B D2 46 8B FE 46 89 BE 46 8B FC -- 01ECC0
FF FF B8 05 74 00 3D 83 E6 C0 3E C5 2E E8 56 89 -- 01ECD0
46 8D 16 00 1C D8 38 9A EA 46 89 00 01 B8 03 EB -- 01ECE0
D0 9A 01 FA 68 03 6A 35 FF E6 B0 3E C5 2E 50 C0 -- 01ECF0

9A C0 76 FF 11 74 00 C0 7E 83 0A C4 83 00 64 40 -- 01ED00
3E C5 2E 01 4A E9 C0 46 8B 02 C4 83 00 1C E0 E7 -- 01ED10
50 C0 46 8D 16 05 89 E6 E4 3E C5 2E 05 8B E6 B0 -- 01ED20
64 40 D0 9A 02 02 68 03 6A 35 FF E6 FC 3E C5 2E -- 01ED30
E0 E7 9A C0 76 FF 11 74 00 C0 7E 83 0A C4 83 00 -- 01ED40
E6 FC 3E C5 2E 01 0C E9 C0 46 8B 02 C4 83 00 1C -- 01ED50
00 3E C5 2E 39 74 00 3D 83 E6 C0 3E C5 2E 05 FF -- 01ED60
FF 2E E7 02 36 FF 2E 50 C0 46 8D 16 0B 05 C6 E7 -- 01ED70
C4 83 00 64 40 D0 9A 6E 6A 05 6A 01 6A E7 00 36 -- 01ED80
83 00 1C E0 E7 9A C0 76 FF 4A 74 00 C0 7E 83 0E -- 01ED90
46 8D 16 3A 05 C6 E7 00 3E C5 2E 00 C2 E9 02 C4 -- 01EDA0
05 6A 01 6A E7 00 36 FF 2E E7 02 36 FF 2E 50 C0 -- 01EDB0
11 74 00 C0 7E 83 0E C4 83 00 64 40 D0 9A 6E 6A -- 01EDC0
86 E9 C0 46 8B 02 C4 83 00 1C E0 E7 9A C0 76 FF -- 01EDD0
00 CE 68 04 6A 50 E6 46 8D 16 50 C0 46 8D 16 00 -- 01EDE0
76 FF 10 74 00 C0 7E 83 0C C4 83 00 64 40 D0 9A -- 01EDF0
```

```
59 EB CO 46 8B 02 C4 83 00 1C EO E7 9A CO 01 FE  -- 01EE00
76 FF 04 C4 83 00 64 4E E3 9A D2 76 FF D4 76 FF  -- 01EE10
CO 46 8D 16 04 C4 83 00 64 4E E3 9A E2 76 FF E4  -- 01EE20
01 F8 68 04 6A E6 AC 36 FF 2E E6 AE 36 FF 2E 50  -- 01EE30
76 FF 10 74 00 CO 7E 83 OC C4 83 00 64 40 DO 9A  -- 01EE40
C5 2E OB EB CO 46 8B 02 C4 83 00 1C EO E7 9A CO  -- 01EE50
57 56 CB 5E 5F C9 9B CO 2B 00 00 05 C7 E6 E4 3E  -- 01EE60
35 FF E9 22 3E C5 2E 50 FE 46 8D 16 00 00 02 C8  -- 01EE70
FE 7E 83 OA C4 83 00 64 3D BA 9A 01 36 68 01 6A  -- 01EE80
02 EB 02 C4 83 00 1C EO E7 9A FE 76 FF OD 74 00  -- 01EE90
00 3E C5 2E 00 00 02 C8 57 56 CB 5E 5F C9 CO 2B  -- 01EEA0
FF 2E E7 02 36 FF 2E 50 FE 46 8D 16 07 05 C6 E7  -- 01EEB0
C4 83 00 64 40 DO 9A 6E 6A 05 6A 01 6A E7 00 36  -- 01EEC0
9A OA 76 FF EC 8B 55 57 56 CB 5E 5F C9 CO 2B OE  -- 01EED0
EC 8B 55 57 56 CB 5E 5F C9 02 C4 83 00 64 59 DC  -- 01EEE0
2B 04 75 00 02 3D 05 89 OA 7E C5 00 5C FO CE 9A  -- 01EEF0
00 05 C7 E8 16 3E C5 2E 00 34 2F BO 9A 40 EB CO  -- 01EF00
00 34 2E 9D 9A 02 C4 83 00 1C E2 9D 9A 00 6A 00  -- 01EF10
C5 2E 00 00 05 C7 E6 C4 3E C5 2E 00 1C D8 38 9A  -- 01EF20
2C 6A 32 9A 07 EB CO 2B 04 75 00 3D 83 E9 26 3E  -- 01EF30
C8 36 FF 2E EC 8B 55 57 56 CB 5E 5F C9 CO 2B 00  -- 01EF40
E7 CA 36 FF 2E E7 CC 36 FF 2E E7 C6 36 FF 2E E7  -- 01EF50
3E C5 2E 00 1C D8 38 9A 08 C4 83 00 1C E2 46 9A  -- 01EF60
00 00 02 C8 57 56 CB 5E 5F C9 00 00 05 C7 E7 48  -- 01EF70
FA 68 03 6A 35 FF E6 BO 3E C5 2E 50 FE 46 8D 16  -- 01EF80
FF OE 74 00 FE 7E 83 OA C4 83 00 64 40 DO 9A 01  -- 01EF90
46 8D 16 00 85 E9 02 C4 83 00 1C EO E7 9A FE 76  -- 01EFA0
DO 9A 02 02 68 03 6A 35 FF E6 FC 3E C5 2E 50 FE  -- 01EFB0
9A FE 76 FF OD 74 00 FE 7E 83 OA C4 83 00 64 40  -- 01EFC0
02 6A 50 FE 46 8D 16 59 EB 02 C4 83 00 1C EO E7  -- 01EFD0
74 00 FE 7E 83 08 C4 83 00 64 40 DO 9A 01 FB 68  -- 01EFE0
C5 2E 34 EB 02 C4 83 00 1C EO E7 9A FE 76 FF OD  -- 01EFF0
AE 36 FF 2E 50 FE 46 8D 16 OD FF E6 FC 3E 01 FE  -- 01F000
00 64 40 DO 9A 01 F8 68 04 6A E6 AC 36 FF 2E E6  -- 01F010
1C EO E7 9A FE 76 FF OB 74 00 FE 7E 83 OC C4 83  -- 01F020
7E C5 00 00 02 C8 57 56 CB 5E 5F C9 02 C4 83 00  -- 01F030
9A 05 D9 9B OE 7E C5 00 5C ED 99 9A 05 D9 9B OA  -- 01F040
20 EA 9A 07 6A 35 FF E7 2C 3E C5 2E 00 5C ED 99  -- 01F050
46 8D 16 16 05 C6 E7 00 3E C5 2E 14 C4 83 00 64  -- 01F060
05 6A 01 6A E7 00 36 FF 2E E7 02 36 FF 2E 50 FE  -- 01F070
56 CB 5E 5F C9 9B OE C4 83 00 64 40 DO 9A 6E 6A  -- 01F080
E8 16 3E C5 2E 4B 75 00 OA 7E 83 00 00 02 C8 57  -- 01F090

FF E7 30 3E C5 2E 50 FE 46 8D 16 3A 74 00 3D 83  -- 01F0A0
FE 7E 83 OA C4 83 00 64 40 DO 9A 6F 6A 03 6A 35  -- 01F0B0
C5 2E 02 C4 83 00 1C EO E7 9A FE 76 FF OB 74 00  -- 01F0C0
9A OC EB 00 14 DB 64 9A 13 74 00 3D 83 E8 42 3E  -- 01F0D0
56 CB 5E 5F C9 00 34 4D 53 9A 05 EB 00 34 4D FO  -- 01F0E0
16 3D 74 00 3D 83 E8 16 3E C5 2E 00 00 02 C8 57  -- 01F0F0
9A 6F 6A 03 6A 35 FF E7 30 3E C5 2E 50 FE 46 8D  -- 01F100
FE 76 FF 10 74 00 FE 7E 83 OA C4 83 00 64 40 DO  -- 01F110
3E C5 2E OF EB FE 46 8B 02 C4 83 00 1C EO E7 9A  -- 01F120
CB 5E 5F C9 00 14 DB 64 9A 05 74 00 3D 83 E8 42  -- 01F130
5F C9 00 01 05 C7 E7 5C 3E C5 2E EC 8B 55 57 56  -- 01F140
00 02 05 C7 E7 5C 3E C5 2E EC 8B 55 57 56 CB 5E  -- 01F150
9A 50 9A 46 8D 16 00 00 66 C8 57 56 CB 5E 5F C9  -- 01F160
2A EO 46 8A E7 18 3E C5 2E 04 C4 83 00 5C DO B3  -- 01F170
05 89 E7 5C 3E C5 2E 00 01 B8 FE 46 89 05 23 E4  -- 01F180
74 01 3D 80 FE 7E 03 E9 2A 3E C5 2E 21 74 CO OB  -- 01F190
2E 3E C5 2E 01 05 C6 FE 7E 03 E9 2A 3E C5 2E 33  -- 01F1A0
```

145

```
00  3D  80  FE  7E  03  E9  2A  3E  C5  2E  1F  EB  05  FF  E9  --  01F1B0
3E  C5  2E  00  05  C6  FE  7E  03  E9  2A  3E  C5  2E  12  74  --  01F1C0
46  C7  00  00  08  C8  57  56  CB  5E  5F  C9  0D  FF  E9  2E  --  01F1D0
FF  03  EB  00  00  FE  46  C7  00  00  FC  46  C7  00  00  FA  --  01F1E0
7E  03  E9  2A  3E  C5  2E  24  74  01  00  FE  7E  81  FE  46  --  01F1F0
03  2E  FC  46  FF  FC  7E  8B  E9  74  00  3D  80  FE  01  FE  --  01F200
16  D2  EB  05  88  FE  46  8B  E9  34  1E  8E  2E  E9  32  3E  --  01F210
C5  2E  E9  32  36  FF  2E  E9  34  36  FF  2E  50  FA  46  8D  --  01F220
64  40  D0  9A  01  3F  68  06  6A  16  6A  35  FF  E9  2E  3E  --  01F230
00  3D  83  E9  2E  3E  C5  2E  00  F8  46  C6  10  C4  83  00  --  01F240
FA  46  8D  16  01  F9  46  C6  04  EB  00  F9  46  C6  06  75  --  01F250
00  64  40  D0  9A  01  40  68  04  6A  50  F8  46  8D  16  50  --  01F260
2E  6A  9A  00  00  14  C8  57  56  CB  5E  5F  C9  0C  C4  83  --  01F270
C5  2E  00  B0  E9  00  54  D2  F1  9A  08  74  C0  0B  00  34  --  01F280
6A  50  F6  46  8D  16  1B  7E  00  01  3D  05  8B  E9  36  3E  --  01F290
60  3E  C5  2E  08  C4  83  00  64  40  D0  9A  00  DA  68  02  --  01F2A0
2E  E9  3A  36  C4  2E  00  54  D2  F1  9A  00  00  05  C7  E7  --  01F2B0
5C  8E  26  3C  03  26  02  E7  C1  4F  3D  8B  E9  36  3E  C5  --  01F2C0
3E  C5  2E  E9  3E  36  C4  2E  F8  5E  D9  9B  05  D9  9B  02  --  01F2D0
9B  02  5C  8E  26  3C  03  26  02  E7  C1  4F  3D  8B  E9  36  --  01F2E0
00  01  F2  46  C7  00  01  F4  46  C7  FC  5E  D9  9B  05  D9  --  01F2F0
16  00  25  EC  46  C7  00  00  EE  46  C7  00  80  F0  46  C7  --  01F300
F2  76  FF  F0  76  FF  EE  76  FF  EC  76  FF  50  F6  46  8D  --  01F310
40  D0  9A  00  D9  68  09  6A  F4  76  FF  50  F8  46  8D  16  --  01F320
C9  9B  00  01  05  C7  E7  60  3E  C5  2E  16  C4  83  00  64  --  01F330
C0  0B  00  34  2E  6A  9A  00  00  16  C8  57  56  CB  5E  5F  --  01F340
E9  04  C4  83  00  54  D5  E7  9A  50  F6  46  8D  16  10  74  --  01F350
8D  16  1B  7C  00  01  3D  05  8B  E9  36  3E  C5  2E  00  C5  --  01F360
08  C4  83  00  64  40  D0  9A  00  DA  68  02  6A  50  F4  46  --  01F370
E7  9A  50  F6  46  8D  16  00  00  05  C7  E7  60  3E  C5  2E  --  01F380
03  7F  00  3D  83  E9  36  3E  C5  2E  04  C4  83  00  54  D5  --  01F390
4F  3D  8B  E9  36  3E  C5  2E  E9  3A  36  C4  2E  00  84  E9  --  01F3A0
5E  D9  9B  05  D9  9B  02  5C  8E  26  3C  03  26  02  E7  C1  --  01F3B0
E7  C1  4F  3D  8B  E9  36  3E  C5  2E  E9  3E  36  C4  2E  F8  --  01F3C0
C7  FC  5E  D9  9B  05  D9  9B  02  5C  8E  26  3C  03  26  02  --  01F3D0
46  C7  00  80  EE  46  C7  00  01  F0  46  C7  00  01  F2  46  --  01F3E0
EA  76  FF  50  F4  46  8D  16  00  25  EA  46  C7  00  00  EC  --  01F3F0
50  F8  46  8D  16  F0  76  FF  EE  76  FF  EC  76  FF  01  FE  --  01F400
16  C4  83  00  64  40  D0  9A  00  D9  68  09  6A  F2  76  FF  --  01F410
57  56  CB  5E  5F  C9  9B  00  01  05  C7  E7  60  3E  C5  2E  --  01F420
00  01  3D  05  89  0A  7E  C5  00  1C  E6  5A  9A  EC  8B  55  --  01F430

CB  5E  5F  C9  05  8B  0A  7E  C5  00  1C  C4  B9  9A  05  75  --  01F440
E6  C8  3E  C5  2E  00  01  FE  46  C7  00  00  02  C8  57  56  --  01F450
74  00  3D  83  E6  C4  3E  C5  2E  16  75  05  0B  02  45  8B  --  01F460
6A  00  6A  1D  7E  00  05  3D  05  8B  E9  36  3E  C5  2E  29  --  01F470
0A  C4  83  00  64  28  52  9A  12  97  68  01  6A  00  6A  00  --  01F480
5E  5F  C9  FE  46  8B  00  02  FE  46  C7  05  75  00  02  3D  --  01F490
B3  24  00  3C  86  9A  00  3C  86  9C  00  24  77  B0  00  CB  --  01F4A0
78  02  00  24  77  AA  00  24  7C  E6  00  24  7C  C2  00  3C  --  01F4B0
78  06  00  24  7B  38  00  24  7B  36  00  24  77  C0  00  24  --  01F4C0
77  B8  00  3C  86  9E  00  24  77  20  00  24  7C  E5  00  24  --  01F4D0
90  7E  00  24  77  BC  00  3C  90  7A  00  24  77  B4  00  24  --  01F4E0
90  C2  00  24  77  90  00  24  7C  C0  00  24  77  AC  00  3C  --  01F4F0
7C  EA  00  24  77  A8  00  3C  90  C6  00  3C  86  A2  00  3C  --  01F500
B4  2A  00  3C  91  10  00  3C  B3  2A  00  3C  91  0E  00  24  --  01F510
77  CE  00  24  77  CA  00  24  7C  F0  00  24  7C  E8  00  3C  --  01F520
7B  32  00  24  77  C8  00  24  77  C4  00  24  77  C6  00  24  --  01F530
77  94  00  3C  B3  10  00  3C  B3  12  00  24  77  8C  00  24  --  01F540
0A  3D  70  A3  D7  0A  00  6C  31  50  00  24  7E  F6  00  24  --  01F550
```

146

```
51 EB 85 1E B8 52 3F D3 33 33 33 33 33 33 3F B7 -- 01F560
00 00 00 08 00 40 3F F0 00 00 00 00 00 00 3F E0 -- 01F570
01 00 3F E0 00 00 00 00 00 00 40 6F E0 00 00 00 -- 01F580
00 24 77 98 00 24 7A E6 00 24 7A E7 00 24 7C EC -- 01F590
00 24 77 96 00 3C 90 9C 00 3C 87 DE 00 24 77 A0 -- 01F5A0
00 24 77 DE 00 24 77 2F 00 24 77 FE 00 3C 90 98 -- 01F5B0
00 24 77 EE 00 24 77 EA 00 24 77 E6 00 24 77 E2 -- 01F5C0
00 24 7C BC 00 3C B3 1C 00 24 7B 34 00 24 77 F6 -- 01F5D0
00 3C 91 12 00 24 77 8E 00 24 7C BE 00 24 7C BD -- 01F5E0
00 3C 92 52 00 3C B3 14 00 3C 92 54 00 3C B3 16 -- 01F5F0
7C F2 00 3C AF 10 00 24 F4 CB 00 24 F4 96 01 FE -- 01F600
77 55 00 24 77 4D 00 3C 86 A0 00 24 77 3E 00 24 -- 01F610
AA 3C 00 24 77 67 00 24 77 5E 00 24 7E F8 00 24 -- 01F620
90 C4 00 24 F4 7A 00 3C 91 14 00 3C B1 10 00 24 -- 01F630
AE 60 00 3C 90 FC 00 3C 90 D8 00 3C 90 EA 00 3C -- 01F640
7F 82 00 24 7F 70 00 24 7F 5E 00 3C AE B4 00 3C -- 01F650
7F B8 00 24 7F A6 00 24 7F 94 00 24 78 36 00 24 -- 01F660
A5 CA 00 24 A3 CA 00 24 7F CA 00 24 78 1A 00 24 -- 01F670
A7 CA 00 24 78 48 00 24 A7 EC 00 24 A6 CA 00 24 -- 01F680
A7 D0 00 24 AA 3E 00 24 A7 CE 00 24 A7 CC 00 24 -- 01F690
AA 40 00 24 A7 D6 00 24 A7 D4 00 24 A7 D2 00 24 -- 01F6A0
A7 E4 00 24 A7 DC 00 6C 29 26 00 24 A7 D8 00 24 -- 01F6B0
78 30 00 24 78 2C 00 24 AA 3A 00 3C 87 DA 00 24 -- 01F6C0
78 2E 00 24 78 1D 00 24 7B 0E 00 24 78 6B 00 24 -- 01F6D0
78 0C 00 24 78 4C 00 24 78 16 00 24 78 08 00 24 -- 01F6E0
77 6E 00 00 00 00 00 00 00 00 00 24 77 AE 00 24 -- 01F6F0
7B B2 00 24 7B A6 00 24 7B A2 00 24 77 7D 00 24 -- 01F700
7C BA 00 3C F5 A4 00 24 7B AA 00 24 7B AE 00 24 -- 01F710
ED 70 00 24 7C F6 00 24 7C F4 00 24 7D F6 00 24 -- 01F720
00 00 26 C8 57 56 00 3C F0 F0 00 3C ED 64 00 3C -- 01F730
8B 06 C4 83 00 64 24 00 9A 01 6A 50 DA 46 8D 16 -- 01F740
05 8B FE A6 3E C5 2E 05 89 FE A6 3E C5 2E DA 46 -- 01F750
D9 9B FE AA 3E C5 2E FE AE 06 DD 2E 9B 00 97 E9 -- 01F760
E9 1D D9 9B FE B6 3E C5 2E FE BA 06 DD 2E 9B 1D -- 01F770
1D D9 9B FE AA 3E C5 2E FE C2 06 DD 2E 9B 00 91 -- 01F780
73 EB 1D D9 9B FE B6 3E C5 2E FE CA 06 DD 2E 9B -- 01F790
2E 9B 1D D9 9B FE AA 3E C5 2E FE C2 06 DD 2E 9B -- 01F7A0
2E 9B 55 EB 1D D9 9B FE B6 3E C5 2E FE D2 06 DD -- 01F7B0
06 DD 2E 9B 1D D9 9B FE AA 3E C5 2E FE DA 06 DD -- 01F7C0
06 DD 2E 9B 37 EB 1D D9 9B FE B6 3E C5 2E FE AE -- 01F7D0

FE CA 06 DD 2E 9B 1D D9 9B FE AA 3E C5 2E FE C2 -- 01F7E0
13 77 00 04 3D 48 19 EB 1D D9 9B FE B6 3E C5 2E -- 01F7F0
A8 E9 8A E9 6B EA 11 A7 FF 2E D8 8B E0 D1 01 FE -- 01F800
6A FE E2 36 FF 2E FE E4 36 FF 2E E9 E4 E9 C6 E9 -- 01F810
8B 2E FE E2 06 8B 2E 06 C4 83 00 64 24 00 9A 04 -- 01F820
EE D9 9B 02 55 89 05 89 FE E6 3E C5 2E FE E4 16 -- 01F830
1D D9 9B FE EA 3E C5 2E 15 D9 9B FE EE 3E C5 2E -- 01F840
2E FE F6 36 FF 2E FE F8 36 FF 2E 50 FE 46 8D 16 -- 01F850
D0 9A 02 BD 68 06 6A FE F2 36 FF 2E FE F4 36 FF -- 01F860
FE FC 36 FF 2E 50 FE 46 8D 16 10 C4 83 00 64 40 -- 01F870
3E C5 2E 08 C4 83 00 64 59 96 9A FE FA 36 FF 2E -- 01F880
FE E6 3E C5 2E 05 89 FE FE 3E C5 2E 05 8B FE FA -- 01F890
2E 02 55 89 05 89 FF 02 3E C5 2E 02 55 8B 05 8B -- 01F8A0
06 3E C5 2E 01 6A 05 02 55 8B 05 8B FE E6 3E C5 -- 01F8B0
02 55 8B 05 8B FE E6 3E C5 2E 02 55 89 05 89 FF -- 01F8C0
3E C5 2E 02 55 89 05 89 FF 0A 3E C5 2E 02 D4 05 -- 01F8D0
55 89 05 89 FF 0E 3E C5 2E 02 55 8B 05 8B FF 02 -- 01F8E0
D9 9B FF 12 3E C5 2E 05 D9 9B FE F2 3E C5 2E 02 -- 01F8F0
D9 9B FF 12 3E C5 2E 05 D9 9B FE F6 3E C5 2E 1D -- 01F900
```

147

```
1D D9 9B FF 16 3E C5 2E FF 1A 06 DF 2E 9B 04 5D -- 01F910
06 DF 2E 9B 04 5D D9 9B FF 16 3E C5 2E EE D9 9B -- 01F920
FF 22 06 DF 2E 9B 1D D9 9B FF 1C 3E C5 2E FF 20 -- 01F930
C9 9B 00 1C FA 5A 9A 04 5D D9 9B FF 1C 3E C5 2E -- 01F940
D9 9B FF 24 3E C5 2E 00 01 44 C8 57 56 CB 5E 5F -- 01F950
D9 9B 05 D9 9B FF 28 3E C5 2E FE CC 9E D9 9B 05 -- 01F960
00 64 24 FB 9A 07 6A 50 FE CC 86 8D 16 FE D0 9E -- 01F970
ED BA 9A FF 2C 36 FF 2E FF 2E 36 FF 2E 06 C4 83 -- 01F980
DC 2E 9B 05 D9 9B FF 30 3E C5 2E 04 C4 83 00 34 -- 01F990
08 C4 83 00 5C ED F9 9A 00 5C ED 99 9A FF 34 06 -- 01F9A0
D9 9B FF 30 3E C5 2E FF 2E 86 DF 9B FF 2E 86 89 -- 01F9B0
9A FF 34 06 DC 2E 9B 05 D9 9B FF 3C 3E C5 2E 1D -- 01F9C0
FF 2E 86 89 08 C4 83 00 5C ED F9 9A 00 5C ED 99 -- 01F9D0
86 8D 16 1D D9 9B FF 3C 3E C5 2E FF 2E 86 DF 9B -- 01F9E0
FE D8 86 DF 9B 04 C4 83 00 5C E0 79 9A 50 FE D4 -- 01F9F0
16 EC 5E D9 9B FE DA 86 DF 9B FC 5E D9 9B 01 FE -- 01FA00
86 DF 9B 04 C4 83 00 5C E0 79 9A 50 FE D4 86 8D -- 01FA10
16 E8 5E D9 9B FE DA 86 DF 9B F8 5E D9 9B FE D8 -- 01FA20
86 DF 9B 04 C4 83 00 5C E0 79 9A 50 FE D4 86 8D -- 01FA30
16 E4 5E D9 9B FE DA 86 DF 9B F4 5E D9 9B FE D8 -- 01FA40
86 DF 9B 04 C4 83 00 5C E0 79 9A 50 FE D4 86 8D -- 01FA50
9B E0 5E D9 9B FE DA 86 DF 9B F0 5E D9 9B FE D8 -- 01FA60
9B F0 46 D9 9B 80 5E DD 9B FF 78 96 DD 9B EE D9 -- 01FA70
9B C4 56 D9 9B E0 46 D9 9B B8 5E D9 9B BC 56 D9 -- 01FA80
83 FF 2E 86 FF 04 EB 00 00 FF 2E 86 C7 C0 5E D9 -- 01FA90
02 E7 C1 FF 2E BE 8B 00 EA E9 03 7C 04 FF 2E BE -- 01FAA0
80 5E DD 9B 80 46 DC 9B E0 45 D9 9B 1F 16 FD 03 -- 01FAB0
9B F0 45 D9 9B 1F 16 FD 03 02 E7 C1 FF 2E BE 8B -- 01FAC0
02 E7 C1 FF 2E BE 8B FF 78 9E DD 9B FF 78 86 DC -- 01FAD0
5C ED 94 9A F0 5D D8 9B B8 46 D9 9B 1F 16 FD 03 -- 01FAE0
D9 9B 1F 16 FD 03 02 E7 C1 FF 2E BE 8B 13 76 00 -- 01FAF0
16 FD 03 02 E7 C1 FF 2E BE 8B B8 5E D9 9B F0 45 -- 01FB00
13 73 00 5C ED 94 9A F0 5D D8 9B BC 46 D9 9B 1F -- 01FB10
9B F0 45 D9 9B 1F 16 FD 03 02 E7 C1 FF 2E BE 8B -- 01FB20
D9 9B 1F 16 FD 03 02 E7 C1 FF 2E BE 8B BC 5E D9 -- 01FB30
2E BE 8B 13 76 00 5C ED 94 9A E0 5D D8 9B C0 46 -- 01FB40
C0 5E D9 9B E0 45 D9 9B 1F 16 FD 03 02 E7 C1 FF -- 01FB50
9B C4 46 D9 9B 1F 16 FD 03 02 E7 C1 FF 2E BE 8B -- 01FB60
2E BE 8B FF 1E E9 03 72 00 5C ED 94 9A E0 5D D8 -- 01FB70

C4 5E D9 9B E0 45 D9 9B 1F 16 FD 03 02 E7 C1 FF -- 01FB80
5E DD 9B FF 40 36 DC 2E 9B 80 46 DD 9B FF 08 E9 -- 01FB90
78 9E DD 9B FF 40 36 DC 2E 9B FF 78 86 DD 9B 80 -- 01FBA0
46 DD 9B A0 5E DD 9B F0 66 D8 9B F4 46 D9 9B FF -- 01FBB0
D8 9B E4 46 D9 9B FF 58 9E DD 9B A0 4E DC 9B A0 -- 01FBC0
DC 9B A0 4E DC 9B A0 46 DD 9B A0 5E DD 9B E0 66 -- 01FBD0
DC 2E 9B FF 58 86 DD 9B FF 58 9E DD 9B FF 58 86 -- 01FBE0
E4 66 D8 9B E8 46 D9 9B FF 58 9E DD 9B FF 40 36 -- 01FBF0
DD 9B 98 4E DC 9B 98 46 DD 9B 98 5E DD 9B 01 FE -- 01FC00
9B 98 5E DD 9B F4 66 D8 9B F8 46 D9 9B FF 60 9E -- 01FC10
60 9E DD 9B FF 60 86 DC 9B 98 4E DC 9B 98 46 DD -- 01FC20
60 9E DD 9B FF 40 36 DC 2E 9B FF 60 86 DD 9B FF -- 01FC30
00 64 4E FE 9A 00 5C ED 99 9A FF 58 86 DD 9B FF -- 01FC40
5C ED 99 9A FF 60 86 DD 9B A0 5E DD 9B 08 C4 83 -- 01FC50
46 D9 9B 98 5E DD 9B 08 C4 83 00 64 4E FE 9A 00 -- 01FC60
9B FE C4 9E DD 9B A0 4E DC 9B FF 78 A6 DC 9B F8 -- 01FC70
FE C4 86 DC 9B 98 4E DC 9B 80 66 DC 9B E8 46 D9 -- 01FC80
DD 9B FF 60 86 DC 9B FF 58 86 DD 9B 90 5E DD 9B -- 01FC90
90 5E DD 9B FE C4 B6 DC 9B 90 46 DD 9B FE C4 9E -- 01FCA0
C4 9E DD 9B A0 4E DC 9B 80 66 DC 9B E8 46 D9 9B -- 01FCB0
```

148

```
DC 9B 98 4E DC 9B FF 78 A6 DC 9B F8 46 D9 9B FE -- 01FCC0
60 86 DC 9B FF 58 86 DD 9B 88 5E DD 9B FE C4 A6 -- 01FCD0
9B FE C4 B6 DC 9B 88 46 DD 9B FE C4 9E DD 9B FF -- 01FCE0
FF 50 9E DD 9B 90 4E DC 9B F0 46 D9 9B 88 5E DD -- 01FCF0
46 D9 9B FF 40 9E DD 9B 90 4E DC 9B E0 46 D9 9B -- 01FD00
DC 9B E0 46 D9 9B FF 48 9E DD 9B 88 4E DC 9B F0 -- 01FD10
FF 78 8E DC 9B 90 46 DD 9B FF 38 9E DD 9B 88 4E -- 01FD20
A6 DC 9B 80 4E DC 9B 88 46 DD 9B FE C4 9E DD 9B -- 01FD30
9B 88 46 DD 9B C8 5E D9 9B FF 78 86 DC 9B FE C4 -- 01FD40
4E DC 9B 90 46 DD 9B FE BC 9E DD 9B FF 78 8E DC -- 01FD50
9B 80 46 DD 9B FE C4 9E DD 9B FE BC 86 DC 9B 80 -- 01FD60
50 86 DC 9B C8 46 D9 9B D4 5E D9 9B FE C4 A6 DC -- 01FD70
5C ED 99 9A FF 34 06 DC 2E 9B FF 38 A6 DC 9B FF -- 01FD80
46 D9 9B FF 36 86 89 08 C4 83 00 5C ED F9 9A 00 -- 01FD90
34 06 DC 2E 9B FF 40 86 DC 9B FF 48 86 DC 9B D4 -- 01FDA0
86 89 08 C4 83 00 5C ED F9 9A 00 5C ED 99 9A FF -- 01FDB0
9B FE BC 9E DD 9B 88 4E DC 9B E8 46 D9 9B FF 34 -- 01FDC0
C8 46 D9 9B FE C4 9E DD 9B 90 4E DC 9B F8 46 D9 -- 01FDD0
FF 34 06 DC 2E 9B FE BC A6 DC 9B FE C4 86 DC 9B -- 01FDE0
32 86 89 08 C4 83 00 5C ED F9 9A 00 5C ED 99 9A -- 01FDF0
FE BC 9E DD 9B 90 4E DC 9B E8 46 D9 9B FF 01 FE -- 01FE00
46 D9 9B FE C4 9E DD 9B 88 4E DC 9B F8 46 D9 9B -- 01FE10
34 06 DC 2E 9B FE BC 86 DC 9B FE C4 86 DC 9B D4 -- 01FE20
86 89 08 C4 83 00 5C ED F9 9A 00 5C ED 99 9A FF -- 01FE30
00 5C ED A7 9A 50 FF 36 86 2B FF 32 86 8B FF 30 -- 01FE40
3E C5 2E FF 2C 36 C4 2E FE C4 9E DD 9B 02 C4 83 -- 01FE50
DD 9B FE C4 B6 DC 9B 24 D8 26 9B 05 D9 9B FF 30 -- 01FE60
5C ED A7 9A 50 FF 34 86 2B FF 30 86 8B FF 70 9E -- 01FE70
C5 2E FF 48 36 C4 2E FE C4 9E DD 9B 02 C4 83 00 -- 01FE80
9B FE C4 B6 DC 9B 24 D8 26 9B 05 D9 9B FF 3C 3E -- 01FE90
D9 9B FF 50 86 DD 9B FF 2C 3E C5 2E FF 68 9E DD -- 01FEA0
D9 9B 05 D8 9B FF 70 8E DC 9B FF 38 86 DC 9B E0 -- 01FEB0
9B E0 D9 9B FF 48 86 DD 9B FF 48 3E C5 2E C8 5E -- 01FEC0
D4 5E D9 9B 05 D8 9B FF 68 8E DC 9B FF 40 A6 DC -- 01FED0
46 DD 9B CC 5E D9 9B FF 70 8E DC 9B 90 46 DD 9B -- 01FEE0
46 DD 9B D0 5E D9 9B FF 70 8E DC 9B E0 D9 9B 88 -- 01FEF0
DC 9B 90 46 DD 9B D8 5E D9 9B FF 68 8E DC 9B 88 -- 01FF00
FF 2E FE EC 36 FF 2E 10 6A DC 5E D9 9B FF 68 8E -- 01FF10

0A C4 83 00 5C ED 6E 9A 50 A8 46 8D 16 FE EA 36 -- 01FF20
46 D9 9B FE C4 9E DD 9B D0 4E D8 9B D4 46 D9 9B -- 01FF30
9B FF 70 9E DD 9B FE C4 A6 DC 9B DC 4E D8 9B C8 -- 01FF40
CC 46 D9 9B FE C4 9E DD 9B D0 4E D8 9B D8 46 D9 -- 01FF50
D9 9B FF 68 9E DD 9B FE C4 A6 DC 9B DC 4E D8 9B -- 01FF60
9B DC 46 D9 9B FE C4 9E DD 9B B4 4E D8 9B D0 46 -- 01FF70
B6 DC 9B FF 70 A6 DC 9B FE C4 A6 DC 9B AC 4E D8 -- 01FF80
89 08 C4 83 00 5C ED F9 9A 00 5C ED 99 9A FF 68 -- 01FF90
FE C4 9E DD 9B B0 4E D8 9B D0 46 D9 9B FF 32 86 -- 01FFA0
A6 DC 9B FE C4 A6 DC 9B A8 4E D8 9B DC 46 D9 9B -- 01FFB0
5C ED F9 9A 00 5C ED 99 9A FF 68 B6 DC 9B FF 70 -- 01FFC0
CC 4E D8 9B D4 46 D9 9B FF 36 86 89 08 C4 83 00 -- 01FFD0
A6 DC 9B D8 4E D8 9B C8 46 D9 9B FE C4 9E DD 9B -- 01FFE0
9B E0 D9 9B FF 68 86 DD 9B FF 70 9E DD 9B FE C4 -- 01FFF0
DD 9B B4 4E D8 9B CC 46 D9 9B FF 68 9E DD 01 FE -- 020000
FE C4 A6 DC 9B AC 4E D8 9B D8 46 D9 9B FE C4 9E -- 020010
9A 00 5C ED 99 9A FF 68 B6 DC 9B FF 70 A6 DC 9B -- 020020
9B CC 46 D9 9B FF 30 86 89 08 C4 83 00 5C ED F9 -- 020030
A8 4E D8 9B D8 46 D9 9B FE C4 9E DD 9B B0 4E D8 -- 020040
9A FF 68 B6 DC 9B FF 70 A6 DC 9B FE C4 A6 DC 9B -- 020050
FF 34 86 89 08 C4 83 00 5C ED F9 9A 00 5C ED 99 -- 020060
```

```
ED  94  9A  1D  D8  9B  FF  32  86  DF  9B  FE  AA  3E  C5  2E  --  020070
ED  F9  9A  00  5C  ED  99  9A  BC  46  D9  9B  15  76  00  5C  --  020080
15  7D  00  FF  36  BE  83  FF  32  86  89  08  C4  83  00  5C  --  020090
C4  83  00  5C  ED  F9  9A  00  5C  ED  99  9A  B8  46  D9  9B  --  0200A0
9B  FF  30  86  DF  9B  FE  B6  3E  C5  2E  FF  36  86  89  08  --  0200B0
ED  99  9A  C4  46  D9  9B  15  76  00  5C  ED  94  9A  1D  D8  --  0200C0
BE  83  FF  30  86  89  08  C4  83  00  5C  ED  F9  9A  00  5C  --  0200D0
F9  9A  00  5C  ED  99  9A  C0  46  D9  9B  15  7D  00  FF  34  --  0200E0
9B  FF  32  86  DF  9B  FF  34  86  89  08  C4  83  00  5C  ED  --  0200F0
36  86  DF  9B  C4  5E  D9  9B  FF  30  86  DF  9B  BC  5E  D9  --  020100
D9  9B  C0  5E  D9  9B  FF  34  86  DF  9B  B8  5E  D9  9B  FF  --  020110
9B  CC  46  D9  9B  FE  BC  9E  DD  9B  C0  4E  D8  9B  D0  46  --  020120
C4  86  DC  9B  C8  46  D9  9B  FE  C4  9E  DD  9B  B8  4E  D8  --  020130
5C  ED  99  9A  FF  34  06  DC  2E  9B  FE  BC  86  DC  9B  FE  --  020140
46  D9  9B  FF  36  86  89  08  C4  83  00  5C  ED  F9  9A  00  --  020150
D8  9B  D8  46  D9  9B  FE  BC  9E  DD  9B  C0  4E  D8  9B  DC  --  020160
FE  C4  86  DC  9B  D4  46  D9  9B  FE  C4  9E  DD  9B  B8  4E  --  020170
00  5C  ED  99  9A  FF  34  06  DC  2E  9B  FE  BC  86  DC  9B  --  020180
D0  46  D9  9B  FF  34  86  89  08  C4  83  00  5C  ED  F9  9A  --  020190
4E  D8  9B  CC  46  D9  9B  FE  BC  9E  DD  9B  C4  4E  D8  9B  --  0201A0
9B  FE  C4  86  DC  9B  C8  46  D9  9B  FE  C4  9E  DD  9B  BC  --  0201B0
9A  00  5C  ED  99  9A  FF  34  06  DC  2E  9B  FE  BC  86  DC  --  0201C0
9B  DC  46  D9  9B  FF  32  86  89  08  C4  83  00  5C  ED  F9  --  0201D0
BC  4E  D8  9B  D8  46  D9  9B  FE  BC  9E  DD  9B  C4  4E  D8  --  0201E0
DC  9B  FE  C4  86  DC  9B  D4  46  D9  9B  FE  C4  9E  DD  9B  --  0201F0
00  5C  ED  99  9A  FF  34  06  DC  2E  9B  FE  BC  86  01  FE  --  020200
36  86  DF  9B  FF  30  86  89  08  C4  83  00  5C  ED  F9  9A  --  020210
DF  9B  B0  5E  D9  9B  FF  34  86  DF  9B  A8  5E  D9  9B  FF  --  020220
B4  5E  D9  9B  FF  30  86  DF  9B  AC  5E  D9  9B  FF  32  86  --  020230
50  00  A2  05  05  8B  02  75  FF  FF  0A  3E  C5  2E  57  56  --  020240
57  56  5E  5F  00  5C  FE  EC  9A  18  6A  50  C8  46  8D  16  --  020250
8D  16  50  00  BA  05  05  8B  02  75  FF  FF  0A  3E  C5  2E  --  020260
AA  3E  C5  2E  5E  5F  00  5C  FE  EC  9A  10  6A  50  B8  46  --  020270
D9  9B  FE  B6  3E  C5  2E  FF  14  9E  D9  9B  05  D9  9B  FE  --  020280
9B  FF  1C  9E  D9  9B  B8  46  D9  9B  FF  18  9E  D9  9B  05  --  020290
B8  66  D8  9B  BC  46  D9  9B  FF  20  9E  D9  9B  C0  46  D9  --  0202A0
9E  D9  9B  C0  66  D8  9B  C4  46  D9  9B  FF  24  9E  D9  9B  --  0202B0

2E  FE  FC  9E  D9  9B  05  D9  9B  FE  F2  3E  C5  2E  FF  28  --  0202C0
A8  46  D9  9B  FF  00  9E  D9  9B  05  D9  9B  FE  F6  3E  C5  --  0202D0
D9  9B  FF  08  9E  D9  9B  B0  46  D9  9B  FF  04  9E  D9  9B  --  0202E0
9B  B4  46  D9  9B  FF  0C  9E  D9  9B  A8  66  D8  9B  AC  46  --  0202F0
FF  FF  0A  3E  C5  2E  01  6A  FF  10  9E  D9  9B  B0  66  D8  --  020300
8D  16  50  FE  FC  86  8D  16  50  00  02  05  05  8B  02  75  --  020310
2C  86  8D  16  0E  C4  83  00  1C  F5  83  9A  50  FF  14  86  --  020320
75  FF  FF  0A  3E  C5  2E  35  FF  FE  FA  3E  C5  2E  50  FF  --  020330
2E  0A  C4  83  00  1C  F9  66  9A  50  00  02  05  05  8B  02  --  020340
2E  FE  E4  36  FF  2E  00  09  05  C7  3D  C5  FF  0A  3E  C5  --  020350
C5  2E  06  C4  83  00  64  24  FB  9A  04  6A  FE  E2  36  FF  --  020360
89  05  89  FF  0E  3E  C5  2E  02  55  8B  05  8B  FF  0A  3E  --  020370
EE  46  C7  00  00  12  C8  57  56  CB  5E  5F  C9  9B  02  55  --  020380
02  53  E9  03  7C  09  EE  7E  83  EE  46  FF  03  EB  00  00  --  020390
83  02  21  E9  03  75  04  EE  7E  83  09  75  01  16  7E  83  --  0203A0
5E  8E  12  7E  03  F8  8B  28  EE  46  6B  39  75  00  EE  7E  --  0203B0
9B  0E  7E  C5  F8  5E  D9  9B  20  55  D9  9B  EE  D9  9B  14  --  0203C0
46  6B  0C  45  D9  9B  0A  7E  C5  FC  5E  D9  9B  0C  45  D9  --  0203D0
7E  83  24  5D  D9  9B  14  5E  8E  12  7E  03  F8  8B  28  EE  --  0203E0
03  74  06  EE  7E  83  09  74  03  EE  7E  83  0F  74  00  EE  --  0203F0
5E  8E  12  7E  03  F8  8B  28  EE  46  6B  00  D2  E9  01  FE  --  020400
9B  0E  7E  C5  F0  5E  D9  9B  18  55  D9  9B  EE  D9  9B  14  --  020410
```

150

```
46 6B 08 45 D9 9B 0A 7E C5 F4 5E D9 9B 08 45 D9 -- 020420
7E 83 1C 5D D9 9B 14 5E 8E 12 7E 03 F8 8B 28 EE -- 020430
8B F8 5E D9 9B FC 46 D9 9B 01 6C E9 03 7F 00 EE -- 020440
D9 9B 14 5E 8E 12 7E 03 F8 8B 28 C6 6B 4E EE 76 -- 020450
D9 9B 14 5E 8E 12 7E 03 F8 8B 28 EE 46 6B 24 45 -- 020460
9B F8 46 D9 9B 0E 7E C5 3A 75 03 EE 7E 83 20 5D -- 020470
F8 8B 28 EE 46 6B 0A 76 C4 FC 5E D9 9B 14 45 D8 -- 020480
6B 14 44 D8 26 9B 20 45 D9 9B 14 5E 8E 12 7E 03 -- 020490
E9 24 5D D9 9B 14 5E 8E 12 7E 03 F8 8B 28 EE 46 -- 0204A0
0A 7E C5 FC 5E D9 9B 04 45 D9 9B 0E 7E C5 01 01 -- 0204B0
14 5E 8E 12 7E 03 F8 8B 28 EE 46 6B 04 45 D9 9B -- 0204C0
8B F0 5E D9 9B F4 46 D9 9B 00 DC E9 24 5D D9 9B -- 0204D0
D9 9B 14 5E 8E 12 7E 03 F8 8B 28 C6 6B 4E EE 76 -- 0204E0
D9 9B 14 5E 8E 12 7E 03 F8 8B 28 EE 46 6B 1C 45 -- 0204F0
5E 8E 12 7E 03 F8 8B 28 C6 6B 4E EE 76 8B 18 5D -- 020500
5E 8E 12 7E 03 F8 8B 28 EE 46 6B 20 45 D9 9B 14 -- 020510
7E 03 F8 8B 28 C6 6B 4E EE 76 8B 20 5D D9 9B 14 -- 020520
7E 03 F8 8B 28 EE 46 6B 24 45 D9 9B 14 5E 8E 12 -- 020530
7E 83 0C 74 01 EE 7E 83 24 5D D9 9B 14 5E 8E 12 -- 020540
EE 46 6B 0A 76 C4 39 75 07 EE 7E 83 06 74 04 EE -- 020550
D8 26 9B 18 45 D9 9B 14 5E 8E 12 7E 03 F8 8B 28 -- 020560
D9 9B 14 5E 8E 12 7E 03 F8 8B 28 EE 46 6B 10 44 -- 020570
5E D9 9B 10 45 D8 9B F0 46 D9 9B 0E 7E C5 1C 5D -- 020580
03 F8 8B 28 EE 46 6B 05 D9 9B 0A 7E C5 20 EB F4 -- 020590
9B 05 D9 9B 0E 7E C5 1C 5D D9 9B 14 5E 8E 12 7E -- 0205A0
14 56 8B 12 46 03 28 EE 46 6B EE 76 FF F4 5E D9 -- 0205B0
E9 0A C4 83 00 1C F7 F4 9A 50 F0 46 8D 16 50 52 -- 0205C0
9B F4 46 D9 9B FD BB E9 03 74 04 EE 7E 83 FD C4 -- 0205D0
D9 9B 10 45 D8 9B F0 46 D9 9B 0E 7E C5 F0 5E D9 -- 0205E0
00 00 20 C8 57 56 CB 5E 5F C9 9B FD A1 E9 F4 5E -- 0205F0
10 6A FE 56 89 FC 46 89 10 56 8B 0E 46 8B 01 FE -- 020600
9A 50 EC 46 8D 16 50 00 18 05 0E 46 8B 10 76 FF -- 020610
9A F0 5E D8 9B EC 46 D9 9B 0A C4 83 00 5C ED 6E -- 020620
08 55 D9 9B FC 7E C5 EE D9 9B 40 75 00 5C ED 94 -- 020630
12 7E 83 0C 74 01 12 7E 83 04 5D D9 9B FC 7E C5 -- 020640
04 45 D9 9B 0A 7E C5 0F 75 06 12 7E 83 06 74 04 -- 020650

7E C5 05 D9 9B 0A 7E C5 5D EB 1D D9 9B FC 7E C5 -- 020660
08 5D D9 9B FC 7E C5 EE D9 9B 4F EB 1D D9 9B FC -- 020670
C5 0A 76 C4 E0 5E DD 9B F0 66 D8 9B EC 46 D9 9B -- 020680
D9 9B E0 76 DC 9B 04 64 D8 26 9B 05 D9 9B 0A 7E -- 020690
E0 D9 9B EC 4E D8 9B E8 46 D9 9B 0A 76 C4 E8 5E -- 0206A0
7E C5 E8 46 D9 9B 1D D9 9B FC 7E C5 04 D8 26 9B -- 0206B0
ED 94 9A F8 5E D8 9B F4 46 D9 9B 04 5D D9 9B FC -- 0206C0
7E C5 14 55 D9 9B FC 7E C5 EE D9 9B 43 75 00 5C -- 0206D0
74 02 12 7E 83 0C 74 01 12 7E 83 10 5D D9 9B FC -- 0206E0
7E C5 0C 45 D9 9B 0A 7E C5 10 75 03 12 7E 83 06 -- 0206F0
7E C5 08 45 D9 9B 0A 7E C5 62 EB 0C 5D D9 9B FC -- 020700
5D D9 9B FC 7E C5 EE D9 9B 52 EB 0C 5D D9 9B FC -- 020710
0A 76 C4 E0 5E DD 9B F8 66 D8 9B F4 46 D9 9B 10 -- 020720
E0 76 DC 9B 0C 64 D8 26 9B 08 45 D9 9B 0A 7E C5 -- 020730
9B F4 4E D8 9B E8 46 D9 9B 0A 76 C4 E8 5E D9 9B -- 020740
D9 9B 0C 5D D9 9B FC 7E C5 08 44 D8 26 9B E0 D9 -- 020750
57 56 CB 5E 5F C9 9B 14 5D D9 9B FC 7E C5 E8 46 -- 020760
03 EB 00 00 FE 46 C7 FF FF FC 46 C7 00 00 04 C8 -- 020770
28 FE 46 6B 00 90 E9 03 7C 09 FE 7E 83 FE 46 FF -- 020780
7E 03 F8 8B 28 FE 46 6B 0C 46 8E 0A 76 03 F0 8B -- 020790
ED 94 9A 1C 5C D8 26 9B 18 45 D9 9B 0C 5E 8E 0A -- 0207A0
0C 46 8E 0A 76 03 F0 8B 28 FE 46 6B CC 74 00 5C -- 0207B0
20 45 D9 9B 0C 5E 8E 0A 7E 03 F8 8B 28 FE 46 6B -- 0207C0
```

151

EP 0 533 348 A2

```
FF FC 46 FF A4 74 00 5C ED 94 9A 24 5C D8 26 9B -- 0207D0
8B 0C 56 8B 0A 46 03 28 FE 46 6B 10 76 FF 12 76 -- 0207E0
46 03 28 FE 46 6B 50 00 18 05 C3 8B 51 CA 8B D8 -- 0207F0
06 6A 0E 76 FF FC 76 FF 50 52 0C 56 8B 0A 01 FE -- 020800
C9 9B FF 64 E9 14 C4 83 00 64 3D BA 9A 00 CD 68 -- 020810
3E C5 2E 00 1C FA 5A 9A EC 8B 55 57 56 CB 5E 5F -- 020820
36 FF 2E FE E4 36 FF 2E FF FF 05 C7 3D C5 FF 0A -- 020830
02 3E C5 2E 06 C4 83 00 64 24 FB 9A 04 6A FE E2 -- 020840
02 55 89 05 89 FF 0E 3E C5 2E 02 55 8B 05 8B FF -- 020850
2E 50 FE 46 8D 16 00 00 02 C8 57 56 CB 5E 5F C9 -- 020860
05 8B 02 75 FF FF 02 3E C5 2E 35 FF FE FA 3E C5 -- 020870
02 3E C5 2E 0A C4 83 00 1C F9 66 9A 50 00 02 05 -- 020880
02 55 89 05 89 FF 0E 3E C5 2E 02 55 8B 05 8B FF -- 020890
2E 50 FE 46 8D 16 00 00 02 C8 57 56 CB 5E 5F C9 -- 0208A0
05 8B 02 75 FF FF 06 3E C5 2E 35 FF FE FA 3E C5 -- 0208B0
06 3E C5 2E 0A C4 83 00 1C F9 66 9A 50 00 02 05 -- 0208C0
02 55 89 05 89 FF 0E 3E C5 2E 02 55 8B 05 8B FF -- 0208D0
C5 FF 0A 3E C5 2E 00 00 02 C8 57 56 CB 5E 5F C9 -- 0208E0
16 36 EB 00 1C FA 5A 9A 07 75 FF FF 3D 05 8B 3D -- 0208F0
FF 0A 3E C5 2E 35 FF FE FA 3E C5 2E 50 FE 46 8D -- 020900
C4 83 00 1C F9 66 9A 50 00 02 05 05 8B 02 75 FF -- 020910
FF 0E 3E C5 2E 02 55 8B 05 8B FF 0A 3E C5 2E 0A -- 020920
16 00 00 02 C8 57 56 CB 5E 5F C9 02 55 89 05 89 -- 020930
FF 0E 3E C5 2E 35 FF FE FA 3E C5 2E 50 FE 46 8D -- 020940
C4 83 00 1C F9 66 9A 50 00 02 05 05 8B 02 75 FF -- 020950
00 00 FA 46 C7 00 00 16 C8 57 56 CB 5E 5F C9 0A -- 020960
03 28 FA 46 6B 0A 76 FF 0C 76 FF FA 46 FF 03 EB -- 020970
50 00 1A 05 C3 8B 51 CA 8B D8 8B 14 56 8B 12 46 -- 020980
28 FA 46 6B D6 74 C0 0B 08 C4 83 00 1C FC 1D 9A -- 020990
76 C4 FE 56 89 FC 46 89 40 40 14 56 8B 12 46 03 -- 0209A0
5E DD 9B 04 4C D8 26 9B 08 45 D9 9B FC 7E C5 0A -- 0209B0
9B 0C D8 26 9B 04 45 D9 9B FC 7E C5 0A 76 C4 EA -- 0209C0
46 DC 9B F2 46 DC 9B 05 D9 9B FC 7E C5 F2 5E DD -- 0209D0
45 D9 9B FC 7E C5 0A 76 C4 1D D9 9B 0E 7E C5 EA -- 0209E0
FC 7E C5 0A 76 C4 EA 5E DD 9B 04 4C D8 26 9B 14 -- 0209F0

7E C5 F2 5E DD 9B 0C D8 26 9B 10 45 D9 9B 01 FE -- 020A00
0E 7E C5 EA 46 DC 9B F2 46 DC 9B 0C 45 D9 9B FC -- 020A10
76 C4 EC 8B 55 57 56 CB 5E 5F C9 9B 04 5D D9 9B -- 020A20
00 5C ED 94 9A 1C D8 26 9B 05 D9 9B 0E 7E C5 0A -- 020A30
04 5C D8 26 9B 05 D9 9B 0E 7E C5 0A 76 C4 46 72 -- 020A40
45 D9 9B 0E 7E C5 0A 76 C4 31 77 00 5C ED 94 9A -- 020A50
0A 76 C4 1B 72 00 5C ED 94 9A 08 5C D8 26 9B 04 -- 020A60
5C ED 94 9A 0C 5C D8 26 9B 04 45 D9 9B 0E 7E C5 -- 020A70
56 CB 5E 5F C9 9B C0 2B 02 EB 00 01 B8 05 77 00 -- 020A80
F8 5E D9 9B 04 45 DF 9B 0A 7E C5 00 00 14 C8 57 -- 020A90
FF 0A 3E C5 2E FC 5E D9 9B 06 45 DF 9B 0A 7E C5 -- 020AA0
05 8B FF 02 3E C5 2E 12 75 FF FF 3D 05 8B 3D C5 -- 020AB0
FF 0A 3E C5 2E 10 EB EE 56 89 EC 46 89 02 55 8B -- 020AC0
76 FF EE 76 FF EE 56 89 EC 46 89 02 55 8B 05 8B -- 020AD0
00 1C FB 5B 9A 50 F8 46 8D 16 50 F0 46 8D 16 EC -- 020AE0
5C ED F9 9A 00 5C ED 99 9A F0 46 D9 9B 0C C4 83 -- 020AF0
ED 99 9A F4 46 D9 9B 05 89 0A 7E C5 08 C4 83 00 -- 020B00
02 45 89 0A 7E C5 08 C4 83 00 5C ED F9 9A 00 5C -- 020B10
FE AA 3E C5 2E 00 01 CC C8 57 56 CB 5E 5F C9 9B -- 020B20
C5 2E FE 40 9E D9 9B FF 4C 36 DC 2E 9B 05 D9 9B -- 020B30
3C 9E D9 9B FF 4C 36 DC 2E 9B 05 D9 9B FE B6 3E -- 020B40
44 96 D9 9B FE 40 A6 D8 9B 05 D9 9B 0A 7E C5 FE -- 020B50
40 86 D8 9B 05 D9 9B 0A 7E C5 FE 84 9E D9 9B FE -- 020B60
A6 D8 9B 04 45 D9 9B 0A 7E C5 FE 48 9E D9 9B FE -- 020B70
```

152

```
9B  0A  7E  C5  FE  88  9E  D9  9B  FE  4C  96  D9  9B  FE  3C  --  020B80
EE  D9  9B  FE  50  9E  D9  9B  FE  3C  86  D8  9B  04  45  D9  --  020B90
9A  FE  34  9E  DC  9B  FE  44  86  D9  9B  FE  34  9E  DD  9B  --  020BA0
2B  EB  FE  84  9E  D9  9B  EE  D9  9B  0A  73  00  5C  ED  94  --  020BB0
ED  94  9A  1D  D8  9B  FE  48  86  D9  9B  FE  AA  3E  C5  2E  --  020BC0
D8  9B  FE  44  86  D9  9B  FE  AA  3E  C5  2E  17  76  00  5C  --  020BD0
DD  9B  EE  D9  9B  FE  84  9E  D9  9B  05  D8  9B  FE  48  A6  --  020BE0
ED  94  9A  FE  34  9E  DC  9B  FE  4C  86  D9  9B  FE  34  9E  --  020BF0
2B  EB  FE  88  9E  D9  9B  EE  D9  9B  0A  73  00  5C  01  FE  --  020C00
ED  94  9A  1D  D8  9B  FE  50  86  D9  9B  FE  B6  3E  C5  2E  --  020C10
D8  9B  FE  4C  86  D9  9B  FE  B6  3E  C5  2E  17  76  00  5C  --  020C20
FE  AA  3E  C5  2E  FE  88  9E  D9  9B  05  D8  9B  FE  50  A6  --  020C30
05  D9  9B  FE  B6  3E  C5  2E  FE  7C  9E  D9  9B  05  D9  9B  --  020C40
FF  54  0E  DC  2E  9B  FE  40  86  D9  9B  FE  80  9E  D9  9B  --  020C50
FF  54  0E  DC  2E  9B  FE  3C  86  D9  9B  FE  8C  9E  D9  9B  --  020C60
36  FF  2E  50  FE  96  86  8D  16  00  6A  FE  90  9E  D9  9B  --  020C70
F5  83  9A  50  FE  7C  86  8D  16  FF  12  36  FF  2E  FF  14  --  020C80
FF  FE  FA  3E  C5  2E  50  FE  46  8D  16  0E  C4  83  00  1C  --  020C90
9B  0A  C4  83  00  1C  F9  66  9A  50  FE  96  86  8D  16  35  --  020CA0
00  00  00  00  00  3C  FA  1A  00  3C  FA  22  CB  5E  5F  C9  --  020CB0
40  AA  90  00  00  00  00  00  00  3C  FA  1E  40  B2  C0  00  --  020CC0
40  A9  00  00  00  00  00  40  AF  40  00  00  00  00  00  --  020CD0
40  BC  20  00  00  00  00  40  A7  D0  00  00  00  00  00  --  020CE0
00  3C  F5  C0  00  3C  F5  B8  00  3C  FA  06  00  3C  F5  C8  --  020CF0
00  3C  F5  A6  00  3C  F5  A4  00  3C  F5  C4  00  3C  F5  BC  --  020D00
00  3C  FA  16  00  3C  FA  12  00  3C  FA  0E  00  3C  FA  0A  --  020D10
02  64  00  3C  FA  34  01  9B  00  3C  FA  2C  00  3C  FA  24  --  020D20
F5  AC  00  3C  F5  A8  00  6C  0D  F8  00  6C  0D  F4  02  FF  --  020D30
00  00  00  3C  F5  B4  3F  E0  00  00  00  00  00  00  00  3C  --  020D40
00  00  00  00  00  00  00  3C  F5  B0  40  10  00  00  00  00  --  020D50
00  00  10  C8  57  56  40  00  00  00  00  00  00  00  40  20  --  020D60
2E  29  75  00  5C  ED  94  9A  FF  EC  1E  DC  2E  12  46  DD  --  020D70
DD  F0  76  DC  FF  F4  06  DD  2E  F0  5E  DD  FF  FC  06  DF  --  020D80
73  00  5C  ED  94  9A  FF  EC  1E  DC  2E  0A  46  DD  F8  5E  --  020D90

99  9A  12  76  DC  0A  46  DD  46  EB  E0  D9  F8  46  DD  50  --  020DA0
46  DD  F8  5E  DD  08  C4  83  00  64  3E  62  9A  00  5C  ED  --  020DB0
0A  46  DD  24  73  00  5C  ED  94  9A  FF  EC  1E  DC  2E  12  --  020DC0
F4  06  DD  2E  0A  73  00  5C  ED  94  9A  FF  EC  1E  DC  2E  --  020DD0
5E  DD  F8  46  DC  FF  F4  06  DD  2E  08  EB  F8  6E  DC  FF  --  020DE0
00  00  00  00  00  00  00  CB  5E  5F  C9  9B  F8  46  DD  F8  --  020DF0
00  00  00  02  40  09  21  FB  54  44  2D  18  00  00  01  FE  --  020E00
43  20  20  20  2D  2D  2D  2D  2D  2D  2D  2D  2D  2D  2D  0A  --  020E10
4F  20  43  20  20  20  20  20  52  20  4F  20  4C  20  4F  20  --  020E20
4E  20  4F  20  49  20  54  20  43  20  45  20  52  20  52  20  --  020E30
34  20  6E  6F  69  73  72  65  56  28  20  20  20  20  20  20  --  020E40
2D  2D  2D  2D  2D  2D  2D  2D  2D  2D  20  20  20  29  33  2E  --  020E50
72  63  6C  43  5F  74  69  6E  49  6D  37  5B  1B  00  0A  2D  --  020E60
20  52  20  4F  20  52  20  52  20  45  20  20  6D  30  5B  1B  --  020E70
41  20  20  20  2E  29  58  28  32  36  32  31  20  20  3D  20  --  020E80
20  35  34  73  49  6E  6F  69  74  61  64  61  72  47  6C  6C  --  020E90
72  20  20  20  2E  45  53  4C  41  46  20  3D  3D  20  29  28  --  020EA0
74  61  74  73  20  72  75  6F  59  00  0A  6E  72  75  74  65  --  020EB0
46  4F  53  6D  34  5B  1B  20  20  3A  73  69  20  6E  6F  69  --  020EC0
72  75  6F  59  00  0A  6D  30  5B  1B  46  4F  4F  52  50  54  --  020ED0
5B  1B  20  20  3A  73  69  20  6E  6F  69  74  61  74  73  20  --  020EE0
0A  6D  30  5B  1B  48  43  55  4F  54  48  47  49  52  6D  34  --  020EF0
49  46  49  4E  55  20  28  43  32  33  5B  1B  41  5B  1B  00  --  020F00
20  28  43  32  35  5B  1B  41  5B  1B  00  0A  29  20  44  45  --  020F10
45  4D  20  45  52  55  54  43  49  50  20  20  68  74  69  57  --  020F20
```

153

```
43 32 35 5B 1B 41 5B 1B 00 0A 29 20 59 52 4F 4D -- 020F30
55 54 43 49 50 20 20 74 75 6F 68 74 69 57 20 28 -- 020F40
37 5B 1B 00 0A 29 20 59 52 4F 4D 45 4D 20 45 52 -- 020F50
20 20 6D 30 5B 1B 72 63 6C 43 5F 74 69 6E 49 6D -- 020F60
72 61 74 53 4D 50 74 65 47 20 20 72 65 74 66 61 -- 020F70
5F 6D 70 20 20 20 20 3A 73 73 65 72 64 64 41 74 -- 020F80
20 20 20 20 44 36 25 3D 20 73 73 65 72 64 64 61 -- 020F90
00 0A 64 35 25 3D 20 65 7A 69 73 5F 6D 70 20 20 -- 020FA0
73 20 6F 74 20 74 6E 61 77 20 75 6F 79 20 6F 44 -- 020FB0
20 73 65 67 61 73 73 65 6D 20 65 68 74 20 65 65 -- 020FC0
73 65 6E 69 74 75 6F 72 62 75 73 20 6D 6F 72 66 -- 020FD0
00 64 25 00 0A 29 32 2F 31 2F 30 28 20 20 3F 20 -- 020FE0
6F 44 00 0A 64 31 25 43 39 37 5B 1B 41 32 5B 1B -- 020FF0
75 20 6F 74 20 74 6E 61 77 20 75 6F 79 20 01 FE -- 021000
72 6F 66 65 42 20 72 6F 66 20 42 46 43 20 65 73 -- 021010
29 31 2F 30 28 20 20 3F 20 72 65 74 66 41 2F 65 -- 021020
31 25 43 39 37 5B 1B 41 32 5B 1B 00 64 25 00 0A -- 021030
72 63 6C 43 5F 74 69 6E 49 6D 37 5B 1B 00 0A 64 -- 021040
20 20 20 20 20 20 20 47 45 42 20 20 6D 30 5B 1B -- 021050
20 20 20 64 31 25 3D 67 61 6C 66 5F 73 73 65 6D -- 021060
73 20 20 20 20 20 64 31 25 3D 73 73 65 6D 20 20 -- 021070
20 20 20 20 64 31 25 3D 67 61 6C 66 5F 70 6F 74 -- 021080
31 25 3D 67 61 6C 66 5F 64 65 69 66 69 6E 75 20 -- 021090
72 63 6C 43 5F 74 69 6E 49 6D 37 5B 1B 00 0A 64 -- 0210A0
74 6E 65 72 72 75 43 74 65 47 20 20 6D 30 5B 1B -- 0210B0
43 74 65 47 43 35 33 5B 1B 41 5B 1B 00 0A 43 57 -- 0210C0
35 5B 1B 41 5B 1B 00 0A 43 44 74 6E 65 72 72 75 -- 0210D0
72 6F 74 70 69 72 63 73 65 44 6C 6C 69 46 43 35 -- 0210E0
5F 74 69 6E 49 6D 37 5B 1B 00 0A 65 6C 62 61 54 -- 0210F0
55 4E 5F 58 41 4D 20 20 6D 30 5B 1B 72 63 6C 43 -- 021100
4C 43 4E 20 20 64 32 25 3D 52 4F 43 5F 46 4F 4D -- 021110
64 34 25 3D 45 5A 49 53 5F 53 42 41 54 5F 52 43 -- 021120
00 0A 64 35 25 3D 65 7A 69 73 5F 66 75 62 20 20 -- 021130

30 5B 1B 72 63 6C 63 5F 74 69 6E 69 6D 37 5B 1B -- 021140
20 3D 20 20 52 20 4F 20 52 20 52 20 45 20 20 6D -- 021150
5F 66 75 62 20 20 20 2E 29 58 28 31 31 33 31 20 -- 021160
72 20 20 3B 4C 4C 55 4E 20 3D 3D 20 72 63 6C 63 -- 021170
53 43 38 36 5B 1B 41 5B 1B 00 0A 6E 72 75 74 65 -- 021180
37 5B 1B 00 0A 72 61 42 65 6C 62 75 6F 44 74 65 -- 021190
1B 0A 6D 30 5B 1B 72 63 6C 43 5F 74 69 6E 49 6D -- 0211A0
37 5B 1B 0A 00 0A 44 4E 45 43 37 37 5B 1B 41 5B -- 0211B0
5B 1B 6B 73 61 4D 61 69 56 72 6F 43 6C 6F 43 6D -- 0211C0
20 20 20 20 20 20 20 20 20 47 45 42 20 20 6D 30 -- 0211D0
52 50 20 20 20 20 59 4D 4D 55 44 20 20 20 20 20 -- 0211E0
20 20 20 20 20 20 20 20 20 20 20 4D 41 52 47 4F -- 0211F0
53 6D 37 5B 1B 00 0A 44 4E 45 20 20 20 20 01 FE -- 021200
42 20 20 6D 30 5B 1B 72 63 6C 43 5F 74 72 61 74 -- 021210
61 6C 66 5F 6E 65 70 6F 74 63 20 20 20 20 47 45 -- 021220
6C 66 5F 77 64 6E 77 20 20 20 20 64 31 25 3D 67 -- 021230
72 65 62 6D 75 6E 20 20 20 20 64 31 25 3D 67 61 -- 021240
25 3D 73 74 6E 69 6F 70 5F 66 65 72 5F 66 6F 5F -- 021250
6C 43 5F 74 72 61 74 53 6D 37 5B 1B 00 0A 64 31 -- 021260
65 6C 69 46 6E 65 70 4F 20 20 6D 30 5B 1B 72 63 -- 021270
37 5B 1B 00 0A 29 44 41 45 52 20 2C 54 43 28 20 -- 021280
20 6D 30 5B 1B 72 63 6C 43 5F 74 72 61 74 53 6D -- 021290
78 25 20 3D 20 20 52 20 4F 20 52 20 52 20 45 20 -- 0212A0
65 6C 69 46 6E 65 70 4F 20 6E 69 20 20 29 58 28 -- 0212B0
74 72 61 74 53 6D 37 5B 1B 00 0A 29 54 43 28 20 -- 0212C0
69 66 20 54 43 20 20 6D 30 5B 1B 72 63 6C 43 5F -- 0212D0
```

```
20 20 2E 64 65 6E 65 70 6F 20 73 61 77 20 65 6C -- 0212E0
3D 72 6F 72 72 65 2E 72 74 73 5F 74 63 20 20 20 -- 0212F0
6E 65 70 6F 74 63 20 20 20 20 20 29 58 28 78 25 -- 021300
53 6D 37 5B 1B 00 0A 64 31 25 3D 67 61 6C 66 5F -- 021310
47 20 20 6D 30 5B 1B 72 63 6C 43 5F 74 72 61 74 -- 021320
00 0A 73 72 65 74 65 6D 61 72 61 50 54 43 74 65 -- 021330
5B 1B 72 63 6C 43 5F 74 72 61 74 53 6D 37 5B 1B -- 021340
3D 20 20 52 20 4F 20 52 20 52 20 45 20 20 6D 30 -- 021350
54 43 74 65 47 20 6E 69 20 20 29 58 28 78 25 20 -- 021360
6D 37 5B 1B 00 0A 73 72 65 74 65 6D 61 72 61 50 -- 021370
20 20 6D 30 5B 1B 72 63 6C 43 5F 74 72 61 74 53 -- 021380
36 31 20 20 3D 20 20 52 20 4F 20 52 20 52 20 45 -- 021390
61 72 61 70 5F 74 63 20 20 20 20 29 58 28 31 30 -- 0213A0
20 20 64 31 25 3D 70 65 73 5F 6B 73 61 6D 2E 6D -- 0213B0
74 61 72 61 70 65 73 20 67 6E 6F 72 77 20 20 2D -- 0213C0
5F 74 72 61 74 53 6D 37 5B 1B 00 0A 73 6E 6F 69 -- 0213D0
69 77 5F 78 61 4D 20 20 6D 30 5B 1B 72 63 6C 43 -- 0213E0
20 64 33 25 3A 73 6C 6F 43 20 20 2E 77 6F 64 6E -- 0213F0
33 25 3A 73 77 6F 52 20 20 20 64 34 25 2D 01 FE -- 021400
43 31 36 5B 1B 41 5B 1B 00 0A 64 34 25 2D 20 64 -- 021410
20 64 31 25 3D 67 61 6C 66 5F 6E 65 70 6F 74 63 -- 021420
72 63 61 6D 6D 37 5B 1B 0A 00 0A 44 4E 45 20 20 -- 021430
20 6D 30 5B 1B 72 63 6C 63 5F 73 6E 65 64 5F 6F -- 021440
31 25 3D 70 65 73 5F 6E 20 20 20 20 47 45 42 20 -- 021450
3D 78 69 72 74 61 6D 5F 64 69 6D 20 20 20 20 64 -- 021460
74 6E 69 6F 50 6D 34 5B 1B 20 20 20 20 64 31 25 -- 021470
61 6D 6D 37 5B 1B 00 0A 6D 30 5B 1B 64 32 25 20 -- 021480
30 5B 1B 72 63 6C 63 5F 73 6E 65 64 5F 6F 72 63 -- 021490
20 20 20 3A 52 20 4F 20 52 20 52 20 45 20 20 6D -- 0214A0
72 20 20 39 20 20 6E 61 68 74 20 20 65 72 6F 6D -- 0214B0
73 74 6E 69 6F 70 20 20 65 63 6E 65 72 65 66 65 -- 0214C0
2E 35 25 3D 58 43 33 36 5B 1B 41 5B 1B 00 0A 2E -- 0214D0

63 20 00 0A 66 31 2E 35 25 3D 59 20 20 20 66 31 -- 0214E0
6F 43 20 20 3A 74 6F 74 2E 6D 61 72 61 70 5F 74 -- 0214F0
44 34 25 3D 73 77 6F 52 20 20 44 34 25 3D 73 6C -- 021500
25 20 3A 73 6C 6F 43 00 20 20 20 20 20 20 20 20 -- 021510
3A 73 77 6F 52 20 20 20 20 44 34 25 2D 20 44 34 -- 021520
6D 6D 37 5B 1B 00 0A 44 34 25 2D 20 44 34 25 20 -- 021530
5B 1B 72 63 6C 63 5F 73 6E 65 64 5F 6F 72 63 61 -- 021540
54 43 28 20 65 6C 69 46 6E 65 70 4F 20 20 6D 30 -- 021550
65 20 62 20 20 20 20 20 29 44 41 45 52 20 2C -- 021560
37 5B 1B 41 5B 1B 00 0A 65 20 72 20 6F 20 66 20 -- 021570
37 5B 1B 00 0A 72 20 65 20 74 20 66 20 61 43 30 -- 021580
72 63 6C 63 5F 73 6E 65 64 5F 6F 72 63 61 6D 6D -- 021590
20 52 20 4F 20 52 20 52 20 45 20 20 6D 30 5B 1B -- 0215A0
6E 6E 61 63 20 20 20 3B 29 58 28 78 25 20 3D 20 -- 0215B0
0A 65 6C 69 66 20 54 43 20 6E 65 70 6F 20 74 6F -- 0215C0
5F 73 6E 65 64 5F 6F 72 63 61 6D 6D 37 5B 1B 00 -- 0215D0
74 43 74 69 6E 49 20 20 6D 30 5B 1B 72 63 6C 63 -- 0215E0
6D 6D 37 5B 1B 00 0A 74 75 70 6E 49 70 65 74 53 -- 0215F0
72 63 6C 63 5F 73 6E 65 64 5F 6F 72 63 61 01 FE -- 021600
20 52 20 4F 20 52 20 52 20 45 20 20 6D 30 5B 1B -- 021610
49 20 20 6E 69 20 20 29 58 28 78 25 20 20 3D 20 -- 021620
00 0A 74 75 70 6E 49 70 65 74 53 74 43 74 69 6E -- 021630
49 74 43 74 72 61 74 53 43 33 33 5B 1B 41 5B 1B -- 021640
5F 6F 72 63 61 6D 6D 37 5B 1B 00 0A 74 75 70 6E -- 021650
45 20 20 6D 30 5B 1B 72 63 6C 63 5F 73 6E 65 64 -- 021660
28 78 25 20 20 3D 20 20 52 20 4F 20 52 20 52 20 -- 021670
49 74 43 74 72 61 74 53 20 20 6E 69 20 20 29 58 -- 021680
```

```
70 55 43 37 34 5B 1B 41 5B 1B 00 0A 74 75 70 6E -- 021690
20 28 20 66 75 42 54 43 74 78 65 4E 65 74 61 64 -- 0216A0
0A 64 32 25 43 34 36 5B 1B 41 5B 1B 00 0A 29 20 -- 0216B0
5F 73 6E 65 64 5F 6F 72 63 61 6D 6D 37 5B 1B 00 -- 0216C0
20 52 20 52 20 45 20 20 6D 30 5B 1B 72 63 6C 63 -- 0216D0
69 20 20 29 58 28 78 25 20 20 3D 20 20 52 20 4F -- 0216E0
20 66 75 42 74 43 74 78 65 4E 74 65 47 20 20 6E -- 0216F0
53 43 39 36 5B 1B 41 5B 1B 00 0A 29 64 32 25 28 -- 021700
6D 37 5B 1B 00 0A 74 75 70 6E 49 74 43 70 6F 74 -- 021710
1B 72 63 6C 63 5F 73 6E 65 64 5F 6F 72 63 61 6D -- 021720
20 20 52 20 4F 20 52 20 52 20 45 20 20 6D 30 5B -- 021730
20 20 6E 69 20 20 20 20 29 58 28 78 25 20 20 3D -- 021740
37 5B 1B 00 0A 74 75 70 6E 49 74 43 70 6F 74 53 -- 021750
63 6C 63 5F 73 6E 65 64 5F 6F 72 63 61 6D 20 6D -- 021760
20 20 66 30 2E 33 25 3D 43 20 20 6D 30 5B 1B 72 -- 021770
2E 33 25 3D 59 20 20 20 66 30 2E 33 25 3D 4D 20 -- 021780
5B 1B 00 0A 66 30 2E 33 25 3D 42 20 20 20 66 30 -- 021790
42 65 6C 62 75 6F 44 74 65 53 43 34 35 5B 1B 41 -- 0217A0
37 37 5B 1B 41 5B 1B 00 0A 65 75 6C 61 56 72 61 -- 0217B0
6C 70 73 69 44 6D 37 5B 1B 0A 00 0A 44 4E 45 43 -- 0217C0
30 5B 1B 72 65 74 66 41 5F 72 63 6C 43 5F 79 61 -- 0217D0
5F 77 64 6E 77 20 20 20 20 20 47 45 42 20 20 6D -- 0217E0
69 72 6F 20 20 20 20 20 64 31 25 3D 67 61 6C 66 -- 0217F0
25 3D 6E 65 65 72 63 73 5F 6C 61 6E 69 67 01 FE -- 021800
66 5F 64 65 69 66 69 6E 75 20 20 20 20 20 64 31 -- 021810
73 69 44 6D 37 5B 1B 00 0A 64 31 25 3D 67 61 6C -- 021820
1B 72 65 74 66 41 5F 72 63 6C 43 5F 79 61 6C 70 -- 021830
58 28 78 25 3D 20 72 6F 72 72 45 20 20 6D 30 5B -- 021840
72 65 20 77 6F 64 6E 69 77 20 20 6E 69 20 20 29 -- 021850
0A 2E 6E 72 75 74 65 52 20 20 2E 67 6E 69 73 61 -- 021860
37 5B 1B 00 0A 44 4E 45 43 37 37 5B 1B 41 5B 1B -- 021870

66 41 5F 72 63 6C 43 5F 79 61 6C 70 73 69 44 6D -- 021880
3A 77 6F 64 6E 69 57 20 20 6D 30 5B 1B 72 65 74 -- 021890
25 20 20 2C 20 64 34 25 20 2D 20 64 34 25 20 20 -- 0218A0
69 44 6D 37 5B 1B 00 0A 64 34 25 20 2D 20 64 34 -- 0218B0
72 65 74 66 41 5F 72 63 6C 43 5F 79 61 6C 70 73 -- 0218C0
20 65 20 73 20 6F 20 6C 20 63 20 20 6D 30 5B 1B -- 0218D0
20 69 20 66 20 20 20 20 20 54 20 43 20 20 20 20 -- 0218E0
79 61 6C 70 73 69 44 6D 37 5B 1B 00 0A 65 20 6C -- 0218F0
20 6D 30 5B 1B 72 65 74 66 41 5F 72 63 6C 43 5F -- 021900
2D 2D 2D 2D 2D 2D 2D 2D 2D 2D 2D 2D 2D 2D 2D 20 -- 021910
2D 2D 2D 2D 2D 2D 2D 2D 2D 2D 2D 2D 2D 2D 2D 2D -- 021920
2D 2D 2D 2D 2D 2D 2D 2D 2D 2D 2D 2D 2D 2D 2D 2D -- 021930
1B 00 0A 44 4E 45 20 20 2D 2D 2D 2D 2D 2D 2D 2D -- 021940
72 61 70 5F 62 66 63 20 20 43 30 34 5B 1B 41 5B -- 021950
69 57 6D 37 5B 1B 0A 00 0A 20 20 64 31 25 3D 74 -- 021960
1B 72 65 74 66 41 5F 72 63 6C 43 5F 77 6F 64 6E -- 021970
34 5B 1B 41 5B 1B 00 0A 47 45 42 20 20 6D 30 5B -- 021980
58 6D 34 5B 1B 20 20 3A 77 6F 64 6E 69 57 43 31 -- 021990
20 20 20 6D 30 5B 1B 64 34 25 2D 20 64 34 25 3A -- 0219A0
1B 64 34 25 2D 20 64 34 25 3A 59 6D 34 5B 1B 20 -- 0219B0
5F 77 6F 64 6E 69 57 6D 37 5B 1B 00 0A 6D 30 5B -- 0219C0
20 20 6D 30 5B 1B 72 65 74 66 41 5F 72 63 6C 43 -- 0219D0
6E 69 20 20 29 58 28 78 25 3D 20 72 6F 72 72 45 -- 0219E0
67 6E 69 73 61 72 65 20 77 6F 64 6E 69 77 20 20 -- 0219F0
41 5B 1B 0A 2E 6E 72 75 74 65 52 20 20 2E 01 FE -- 021A00
69 57 6D 37 5B 1B 00 0A 44 4E 45 43 37 37 5B 1B -- 021A10
1B 72 65 74 66 41 5F 72 63 6C 43 5F 77 6F 64 6E -- 021A20
25 3D 67 61 6C 66 5F 77 64 6E 77 20 20 6D 30 5B -- 021A30
```

```
20  20  3A  77  6F  64  6E  69  57  20  20  20  20  20  64  31  --  021A40
1B  64  34  25  2D  20  64  34  25  3A  58  6D  34  5B  1B  00  --  021A50
64  34  25  3A  59  6D  34  5B  1B  20  20  20  20  6D  30  5B  --  021A60
4E  45  20  20  20  20  20  6D  30  5B  1B  64  34  25  2D  20  --  021A70
6F  43  6F  44  72  63  6C  63  4E  6D  37  5B  1B  00  0A  44  --  021A80
6D  37  5B  1B  00  0A  47  45  42  20  20  6D  30  5B  1B  72  --  021A90
20  20  6D  30  5B  1B  72  6F  43  6F  44  72  63  6C  63  4E  --  021AA0
6F  70  5F  66  65  72  5F  66  6F  5F  72  65  62  6D  75  6E  --  021AB0
61  70  65  72  70  20  20  20  64  31  25  3D  73  74  6E  69  --  021AC0
6C  6C  20  20  20  64  31  25  3D  67  61  6C  66  5F  65  72  --  021AD0
69  76  5F  74  63  20  20  20  64  31  25  3D  6C  61  63  6F  --  021AE0
6D  37  5B  1B  00  0A  64  31  25  3D  6B  73  61  6D  5F  61  --  021AF0
20  20  6D  30  5B  1B  72  6F  43  6F  44  72  63  6C  63  4E  --  021B00
28  78  25  20  3D  20  20  52  20  4F  20  52  20  52  20  45  --  021B10
6B  73  61  6D  5F  62  6D  66  20  20  6E  69  20  20  29  58  --  021B20
44  72  63  6C  63  4E  6D  37  5B  1B  00  0A  77  65  6E  5F  --  021B30
20  52  20  52  20  45  20  20  6D  30  5B  1B  72  6F  43  6F  --  021B40
6E  69  20  20  29  58  28  78  25  20  3D  20  20  52  20  4F  --  021B50
4E  6D  37  5B  1B  00  0A  77  65  6E  5F  62  6D  66  20  20  --  021B60
2D  20  20  6D  30  5B  1B  72  6F  43  6F  44  72  63  6C  63  --  021B70
2D  2D  2D  2D  2D  2D  2D  2D  2D  2D  2D  2D  2D  2D  2D  2D  --  021B80
2D  2D  2D  2D  2D  2D  2D  2D  2D  2D  2D  2D  2D  2D  2D  2D  --  021B90
2D  2D  2D  2D  2D  2D  2D  2D  2D  2D  2D  2D  2D  2D  2D  2D  --  021BA0
20  20  2D  2D  2D  2D  2D  2D  2D  2D  2D  2D  2D  2D  2D  2D  --  021BB0
2A  2A  2A  43  35  32  5B  1B  41  5B  1B  00  0A  44  4E  45  --  021BC0
4F  43  20  20  52  4F  4C  4F  43  20  20  4F  4E  20  20  2A  --  021BD0
44  20  20  53  41  57  20  20  4E  4F  49  54  43  45  52  52  --  021BE0
5B  1B  41  5B  1B  00  0A  2A  2A  2A  2A  20  20  45  4E  4F  --  021BF0
3D  74  72  61  70  5F  62  66  63  20  20  43  30  34  01  FE  --  021C00
63  6C  63  4E  6D  37  5B  1B  20  00  0A  20  20  64  31  25  --  021C10

20  6D  30  5B  1B  72  6F  43  65  72  61  70  65  72  50  72  --  021C20
72  5F  66  6F  5F  72  65  62  6D  75  6E  20  47  45  42  20  --  021C30
6E  20  20  64  31  25  3D  73  74  6E  69  6F  70  5F  66  65  --  021C40
3D  74  6E  69  6F  70  5F  6B  63  69  70  5F  72  63  6C  63  --  021C50
61  6C  66  5F  65  72  61  70  65  72  70  20  20  64  31  25  --  021C60
72  63  6C  63  4E  6D  37  5B  1B  00  0A  64  31  25  3D  67  --  021C70
20  20  6D  30  5B  1B  72  6F  43  65  72  61  70  65  72  50  --  021C80
6F  70  5F  66  65  72  5F  66  6F  5F  72  65  62  6D  75  6E  --  021C90
63  4E  6D  37  5B  1B  00  0A  64  31  25  3D  73  74  6E  69  --  021CA0
63  4E  20  20  6D  30  5B  1B  72  6F  43  6F  44  72  63  6C  --  021CB0
53  4C  41  46  20  3D  3D  20  62  6F  4A  6F  44  72  63  6C  --  021CC0
00  0A  6E  72  75  74  65  72  20  20  20  20  20  20  3B  45  --  021CD0
72  61  70  65  72  50  72  63  6C  63  4E  6D  37  5B  1B  20  --  021CE0
72  61  70  65  72  70  20  20  6D  30  5B  1B  72  6F  43  65  --  021CF0
2D  2D  2D  2D  20  20  64  31  25  3D  67  61  6C  66  5F  65  --  021D00
2D  2D  2D  2D  2D  2D  2D  2D  2D  2D  2D  2D  2D  2D  2D  --  021D10
2D  2D  2D  2D  2D  2D  2D  2D  2D  2D  2D  2D  2D  2D  2D  --  021D20
6D  37  5B  1B  00  0A  44  4E  45  20  20  2D  2D  2D  2D  2D  --  021D30
20  20  6D  30  5B  1B  52  43  4C  43  5F  31  57  44  4E  57  --  021D40
20  65  7A  69  73  5F  77  6F  64  6E  69  77  20  77  65  4E  --  021D50
32  57  44  4E  57  6D  37  5B  1B  00  0A  2E  30  35  20  3D  --  021D60
77  20  77  65  4E  20  20  6D  30  5B  1B  52  43  4C  43  5F  --  021D70
30  30  31  20  3D  20  65  7A  69  73  5F  77  6F  64  6E  69  --  021D80
43  4C  43  5F  33  57  44  4E  57  6D  37  5B  1B  00  0A  2E  --  021D90
6F  64  6E  69  77  20  77  65  4E  20  20  6D  30  5B  1B  52  --  021DA0
0A  00  0A  2E  30  30  32  20  3D  20  65  7A  69  73  5F  77  --  021DB0
30  5B  1B  72  63  6C  63  5F  6D  6F  6F  7A  6D  37  5B  1B  --  021DC0
6E  69  67  69  72  6F  20  20  20  20  47  45  42  20  20  6D  --  021DD0
20  20  20  64  31  25  3D  6E  65  65  72  63  73  5F  6C  61  --  021DE0
```

```
31 25 3D 67 61 6C 66 5F 68 73 65 72 66 65 72 20 -- 021DF0
67 61 6C 66 5F 77 64 6E 77 20 20 20 20 64 01 FE -- 021E00
61 63 43 35 34 5B 1B 41 5B 1B 00 0A 64 31 25 3D -- 021E10
3B 48 53 45 52 46 45 52 20 6D 6F 72 66 20 6C 6C -- 021E20
4E 45 20 20 20 20 20 20 20 2E 74 69 78 65 20 20 -- 021E30
72 63 6C 63 5F 6D 6F 6F 7A 6D 37 5B 1B 00 0A 44 -- 021E40
20 52 20 4F 20 52 20 52 20 45 20 20 6D 30 5B 1B -- 021E50
44 20 20 6E 69 20 20 29 58 28 78 25 20 20 3D 20 -- 021E60
73 20 54 43 28 20 20 65 6C 69 46 65 74 65 6C 65 -- 021E70
0A 29 68 63 74 61 72 63 73 20 2C 6E 65 65 72 63 -- 021E80
5B 1B 72 63 6C 63 5F 6D 6F 6F 7A 6D 37 5B 1B 00 -- 021E90
20 68 63 74 61 72 63 73 20 20 54 43 20 20 6D 30 -- 021EA0
65 6C 65 64 20 20 73 61 77 20 20 65 6C 69 66 20 -- 021EB0
63 5F 6D 6F 6F 7A 6D 37 5B 1B 00 0A 2E 64 65 74 -- 021EC0
4F 20 52 20 52 20 45 20 20 6D 30 5B 1B 72 63 6C -- 021ED0
20 20 20 20 29 58 28 78 25 20 20 3D 20 20 52 20 -- 021EE0
72 63 6C 43 5F 79 61 6C 70 73 69 44 20 20 6E 69 -- 021EF0
6D 6F 6F 7A 6D 37 5B 1B 00 0A 72 65 74 66 41 5F -- 021F00
72 63 6C 63 6E 20 20 6D 30 5B 1B 72 63 6C 63 5F -- 021F10
20 64 31 25 3D 74 6E 69 6F 70 5F 6B 63 69 70 5F -- 021F20
5F 66 6F 5F 72 65 62 6D 75 6E 20 20 20 20 20 20 -- 021F30
00 0A 64 31 25 3D 73 74 6E 69 6F 70 5F 66 65 72 -- 021F40
30 5B 1B 72 63 6C 63 5F 6D 6F 6F 7A 6D 37 5B 1B -- 021F50
65 72 63 73 5F 6C 61 6E 69 67 69 72 6F 20 20 6D -- 021F60
73 65 72 66 65 72 20 20 20 20 64 31 25 3D 6E 65 -- 021F70
6E 77 20 20 20 20 64 31 25 3D 67 61 6C 66 5F 68 -- 021F80
1B 41 5B 1B 0A 64 31 25 3D 67 61 6C 66 5F 77 64 -- 021F90
65 6E 6D 37 5B 1B 0A 00 0A 44 4E 45 43 37 37 5B -- 021FA0
30 5B 1B 72 63 6C 63 5F 6C 65 63 6E 61 63 5F 77 -- 021FB0

5F 77 65 6E 6D 37 5B 1B 00 0A 47 45 42 20 20 6D -- 021FC0
20 6D 30 5B 1B 72 63 6C 63 5F 6C 65 63 6E 61 63 -- 021FD0
61 20 62 20 6F 20 6C 20 47 20 74 20 65 20 53 20 -- 021FE0
0A 44 4E 45 43 37 37 5B 1B 41 5B 1B 00 0A 6C 20 -- 021FF0
6C 63 5F 6C 65 63 6E 61 63 6D 37 5B 1B 00 01 FE -- 022000
75 20 20 20 20 47 45 42 20 20 6D 30 5B 1B 72 63 -- 022010
0A 64 31 25 3D 67 61 6C 66 5F 64 65 69 66 69 6E -- 022020
72 63 6C 63 5F 6C 65 63 6E 61 63 6D 37 5B 1B 00 -- 022030
3D 67 61 6C 66 5F 77 64 6E 77 20 20 6D 30 5B 1B -- 022040
6C 61 6E 69 67 69 72 6F 20 20 20 20 20 64 31 25 -- 022050
20 20 20 20 20 64 31 25 3D 6E 65 65 72 63 73 5F -- 022060
67 61 6C 66 5F 65 6C 69 66 5F 65 74 61 64 70 75 -- 022070
6C 65 63 6E 61 63 6D 37 5B 1B 00 0A 64 31 25 3D -- 022080
65 70 6F 74 63 20 20 6D 30 5B 1B 72 63 6C 63 5F -- 022090
6C 43 20 20 20 20 20 20 31 3D 67 61 6C 66 5F 6E -- 0220A0
5B 1B 00 0A 29 54 43 28 20 65 6C 69 46 65 73 6F -- 0220B0
61 6C 66 5F 6E 65 70 6F 74 63 43 35 35 5B 1B 41 -- 0220C0
5F 6C 65 63 6E 61 63 6D 37 5B 1B 00 0A 30 3D 67 -- 0220D0
2D 2D 2D 2D 2D 2D 20 20 6D 30 5B 1B 72 63 6C 63 -- 0220E0
2D 2D 2D 2D 2D 2D 2D 2D 2D 2D 2D 2D 2D 2D 2D 2D -- 0220F0
2D 2D 2D 2D 2D 2D 2D 2D 2D 2D 2D 2D 2D 2D 2D 2D -- 022100
2D 2D 2D 2D 2D 2D 2D 2D 2D 2D 2D 2D 2D 2D 2D 2D -- 022110
1B 00 0A 44 4E 45 20 20 2D 2D 2D 2D 2D 2D 2D 2D -- 022120
72 61 70 5F 62 66 63 20 20 43 30 34 5B 1B 41 5B -- 022130
69 6E 49 6D 37 5B 1B 00 0A 20 20 64 31 25 3D 74 -- 022140
20 20 6D 30 5B 1B 74 73 69 4C 5F 66 65 52 5F 74 -- 022150
44 4E 45 43 30 35 5B 1B 41 5B 1B 00 0A 47 45 42 -- 022160
6E 49 6D 37 5B 1B 43 34 32 5B 1B 41 5B 1B 00 0A -- 022170
6D 30 5B 1B 74 6E 69 6F 50 5F 66 65 52 5F 74 69 -- 022180
37 5B 1B 00 0A 64 31 25 20 74 6E 69 6F 50 20 20 -- 022190
```

158

```
1B 74 6E 69 6F 50 5F 66 65 52 5F 74 69 6E 49 6D -- 0221A0
72 57 20 20 20 3A 72 6F 72 72 45 20 20 6D 30 5B -- 0221B0
72 65 62 6D 75 6E 20 74 6E 69 6F 70 20 67 6E 6F -- 0221C0
20 2E 74 69 78 45 20 20 20 2E 29 64 32 25 28 20 -- 0221D0
62 61 6D 37 5B 1B 00 0A 44 4E 45 20 20 20 20 20 -- 0221E0
45 42 20 20 6D 30 5B 1B 72 63 6C 63 5F 74 72 6F -- 0221F0
72 63 73 43 35 34 5B 1B 41 5B 1B 00 0A 47 01 FE -- 022200
20 73 61 77 20 20 65 6C 69 66 20 20 68 63 74 61 -- 022210
62 61 6D 37 5B 1B 00 0A 64 65 74 65 6C 65 64 20 -- 022220
5F 57 20 20 6D 30 5B 1B 72 63 6C 63 5F 74 72 6F -- 022230
59 54 5F 57 4F 44 4E 49 57 5F 45 54 45 4C 45 44 -- 022240
6C 63 5F 74 72 6F 62 61 6D 37 5B 1B 00 0A 45 50 -- 022250
20 4F 20 52 20 52 20 45 20 20 6D 30 5B 1B 72 63 -- 022260
69 20 20 20 20 29 58 28 78 25 20 20 3D 20 20 52 -- 022270
4E 49 57 5F 45 54 45 4C 45 44 5F 57 20 20 20 6E -- 022280
34 5B 1B 41 5B 1B 00 0A 45 50 59 54 5F 57 4F 44 -- 022290
1B 41 5B 1B 00 0A 72 61 42 74 65 73 65 52 43 30 -- 0222A0
00 0A 54 43 65 74 61 76 69 74 63 41 43 36 35 5B -- 0222B0
1B 20 20 00 0A 44 4E 45 43 37 37 5B 1B 41 5B 1B -- 0222C0
6C 62 61 54 70 65 72 50 72 63 6C 63 4E 6D 37 5B -- 0222D0
20 20 20 20 20 47 45 42 20 20 6D 30 5B 1B 73 65 -- 0222E0
5F 66 65 72 5F 66 6F 5F 72 65 62 6D 75 6E 20 20 -- 0222F0
1B 20 20 00 0A 64 32 25 3D 20 73 74 6E 69 6F 70 -- 022300
6C 62 61 54 70 65 72 50 72 63 6C 63 4E 6D 37 5B -- 022310
2D 2D 2D 2D 2D 2D 2D 2D 20 20 6D 30 5B 1B 73 65 -- 022320
2D 2D 2D 2D 2D 2D 2D 2D 2D 2D 2D 2D 2D 2D 2D 2D -- 022330
2D 2D 2D 2D 2D 2D 2D 2D 2D 2D 2D 2D 2D 2D 2D·2D -- 022340
2D 2D 2D 2D 2D 2D 2D 2D 2D 2D 2D 2D 2D 2D 2D 2D -- 022350

74 53 6D 37 5B 1B 20 20 20 00 0A 44 4E 45 20 20 -- 022360
47 45 42 20 20 6D 30 5B 1B 72 6F 43 5F 74 72 61 -- 022370
3D 65 67 6E 61 72 43 34 32 5B 1B 41 5B 1B 00 0A -- 022380
20 20 20 20 29 64 34 25 3D 72 28 20 20 64 31 25 -- 022390
33 25 3D 4D 20 20 20 20 64 33 25 3D 43 20 20 20 -- 0223A0
3D 64 6E 69 00 0A 64 33 25 3D 59 20 20 20 20 64 -- 0223B0
57 4F 4C 5F 52 43 4C 43 4E 20 20 20 20 64 31 25 -- 0223C0
34 25 3D 48 47 49 48 5F 20 20 20 20 64 34 25 3D -- 0223D0
20 20 64 34 25 3D 46 49 44 5F 20 20 20 20 20 64 -- 0223E0
41 5B 1B 00 0A 64 34 25 3D 32 46 49 44 5F 20 20 -- 0223F0
5B 1B 20 20 00 0A 44 4E 45 43 37 37 5B 1B 01 FE -- 022400
6D 30 5B 1B 62 6F 4A 6F 44 72 63 6C 63 4E 6D 37 -- 022410
72 65 62 6D 75 6E 20 20 20 20 20 47 45 42 20 20 -- 022420
25 3D 73 74 6E 69 6F 70 5F 66 65 72 5F 66 6F 5F -- 022430
44 72 63 6C 63 4E 6D 37 5B 1B 20 20 00 0A 64 31 -- 022440
20 52 20 52 20 45 20 20 6D 30 5B 1B 62 6F 4A 6F -- 022450
6F 73 20 20 20 6E 69 20 20 20 31 20 20 52 20 4F -- 022460
74 65 73 5F 6E 6F 69 74 61 75 71 65 5F 65 76 6C -- 022470
31 20 3C 20 5D 64 31 25 5B 74 65 64 20 20 20 2E -- 022480
4A 6F 44 72 63 6C 63 4E 6D 37 5B 1B 20 20 00 0A -- 022490
20 4F 20 52 20 52 20 45 20 20 6D 30 5B 1B 62 6F -- 0224A0
76 6C 6F 73 20 20 20 6E 69 20 20 20 32 20 20 52 -- 0224B0
00 0A 74 65 73 5F 6E 6F 69 74 61 75 71 65 5F 65 -- 0224C0
62 6F 4A 6F 44 72 63 6C 63 4E 6D 37 5B 1B 20 20 -- 0224D0
2D 2D 2D 2D 2D 2D 2D 2D 2D 2D 20 20 6D 30 5B 1B -- 0224E0
2D 2D 2D 2D 2D 2D 2D 2D 2D 2D 2D 2D 2D 2D 2D 2D -- 0224F0
2D 2D 2D 2D 2D 2D 2D 2D 2D 2D 2D 2D 2D 2D 2D 2D -- 022500
2D 2D 2D 2D 2D 2D 2D 2D 2D 2D 2D 2D 2D 2D 2D 2D -- 022510
6D 37 5B 1B 20 20 00 0A 44 4E 45 20 20 2D 2D 2D -- 022520
74 6E 69 6F 50 6C 6C 41 72 6F 43 72 63 6C 63 4E -- 022530
20 20 20 20 20 20 47 45 42 20 20 6D 30 5B 1B 73 -- 022540
```

```
70  5F  66  65  72  5F  66  6F  5F  72  65  62  6D  75  6E  20  --  022550
5B  1B  20  20  20  00  0A  64  31  25  3D  73  74  6E  69  6F  --  022560
20  3A  42  59  4D  43  20  6D  30  5B  1B  64  31  25  6D  37  --  022570
20  64  33  25  2C  64  33  25  2C  64  33  25  2C  64  33  25  --  022580
4D  43  20  6D  30  5B  1B  64  31  25  6D  37  5B  1B  20  20  --  022590
2C  64  33  25  2C  64  33  25  2C  64  33  25  20  3A  42  59  --  0225A0
3D  3D  3D  43  35  35  5B  1B  41  5B  1B  00  0A  64  33  25  --  0225B0
25  2C  64  33  25  6D  34  5B  1B  20  20  20  3E  3E  3D  3D  --  0225C0
00  0A  6D  30  5B  1B  64  33  25  2C  64  33  25  2C  64  33  --  0225D0
6C  41  72  6F  43  72  63  6C  63  4E  6D  37  5B  1B  20  20  --  0225E0
2D  2D  2D  20  20  6D  30  5B  1B  73  74  6E  69  6F  50  6C  --  0225F0
2D  2D  2D  2D  2D  2D  2D  2D  2D  2D  2D  2D  2D  2D  01  FE  --  022600
2D  2D  2D  2D  2D  2D  2D  2D  2D  2D  2D  2D  2D  2D  2D  2D  --  022610
2D  2D  2D  2D  2D  2D  2D  2D  2D  2D  2D  2D  2D  2D  2D  2D  --  022620
6D  37  5B  1B  00  0A  44  4E  45  20  20  2D  2D  2D  2D  2D  --  022630
20  6D  30  5B  1B  72  6F  43  78  69  50  72  63  6C  63  4E  --  022640
50  72  63  6C  63  4E  6D  37  5B  1B  00  0A  47  45  42  20  --  022650
67  6E  61  72  20  20  00  6D  30  5B  1B  72  6F  43  78  69  --  022660
20  29  64  34  25  3D  72  28  20  20  20  64  31  25  3D  65  --  022670
25  3D  4D  20  20  20  20  64  33  25  3D  43  20  20  20  20  --  022680
42  20  20  20  20  64  33  25  3D  59  20  20  20  20  64  33  --  022690
4E  45  43  37  37  5B  1B  41  5B  1B  00  0A  64  33  25  3D  --  0226A0
70  65  72  50  72  63  6C  63  4E  6D  37  5B  1B  00  0A  44  --  0226B0
37  5B  1B  00  0A  6D  30  5B  1B  73  72  65  6B  72  61  4D  --  0226C0
72  65  6B  72  61  4D  70  65  72  50  72  63  6C  63  4E  6D  --  0226D0
52  20  4F  20  52  20  52  20  45  20  20  6D  30  5B  1B  73  --  0226E0
20  20  20  2E  29  58  28  30  32  30  31  20  20  3D  20  20  --  0226F0

38  31  5B  1B  41  5B  1B  00  0A  2E  6E  72  75  74  65  72  --  022700
57  4F  44  4E  49  57  5F  45  54  41  45  52  43  5F  57  43  --  022710
72  63  6C  63  4E  6D  37  5B  1B  00  0A  45  50  59  54  5F  --  022720
20  6D  30  5B  1B  73  72  65  6B  72  61  4D  70  65  72  50  --  022730
25  20  20  3D  20  20  52  20  4F  20  52  20  52  20  45  20  --  022740
52  43  5F  57  20  20  6E  69  20  20  20  20  29  58  28  78  --  022750
45  50  59  54  5F  57  4F  44  4E  49  57  5F  45  54  41  45  --  022760
41  45  52  43  5F  57  43  39  33  5B  1B  41  5B  1B  00  0A  --  022770
4E  49  5F  57  20  26  20  57  4F  44  4E  49  57  5F  45  54  --  022780
5B  1B  00  0A  54  4E  45  4D  45  4C  45  5F  54  52  45  53  --  022790
65  6B  72  61  4D  70  65  72  50  72  63  6C  63  4E  6D  37  --  0227A0
20  4F  20  52  20  52  20  45  20  20  6D  30  5B  1B  73  72  --  0227B0
69  20  20  20  20  29  58  28  78  25  20  20  3D  20  20  52  --  0227C0
44  4E  49  57  5F  45  54  41  45  52  43  5F  57  20  20  6E  --  0227D0
65  72  50  72  63  6C  63  4E  6D  37  5B  1B  00  0A  57  4F  --  0227E0
20  45  20  20  6D  30  5B  1B  73  72  65  6B  72  61  4D  70  --  0227F0
78  25  20  20  3D  20  20  52  20  4F  20  52  20  52  01  FE  --  022800
4E  49  5F  57  20  20  6E  69  20  20  20  20  20  29  58  28  --  022810
5B  1B  00  0A  54  4E  45  4D  45  4C  45  5F  54  52  45  53  --  022820
5B  1B  41  5B  1B  00  0A  64  32  25  43  34  37  5B  1B  41  --  022830
63  6C  63  4E  6D  37  5B  1B  00  0A  44  4E  45  43  37  37  --  022840
5B  1B  73  72  65  6B  72  61  4D  65  74  65  6C  65  44  72  --  022850
74  65  6C  65  64  5F  6F  6E  5F  64  6E  69  20  20  6D  30  --  022860
43  65  74  61  76  69  74  63  41  20  20  64  32  25  3D  65  --  022870
61  6D  20  6F  4E  43  33  36  5B  1B  41  5B  1B  00  0A  54  --  022880
5B  1B  00  0A  44  4E  45  20  20  20  2E  73  72  65  6B  72  --  022890
72  61  4D  65  74  65  6C  65  44  72  63  6C  63  4E  6D  37  --  0228A0
20  52  20  52  20  45  20  20  6D  30  5B  1B  73  72  65  6B  --  0228B0
20  20  20  29  58  28  78  25  20  20  3D  20  20  52  20  4F  --  0228C0
4E  49  57  5F  45  53  41  52  45  5F  57  20  20  6E  69  20  --  0228D0
52  20  20  20  29  64  31  25  3D  69  28  20  20  57  4F  44  --  0228E0
63  6C  63  4E  6D  37  5B  1B  00  0A  2E  6E  72  75  74  65  --  0228F0
```

160

```
5B  1B  73  72  65  6B  72  61  4D  65  74  65  6C  65  44  72  --  022900
74  6E  69  6F  70  66  65  52  6D  34  5B  1B  20  20  6D  30  --  022910
65  73  61  72  65  20  20  73  61  77  20  20  64  31  25  20  --  022920
45  43  37  37  5B  1B  41  5B  1B  00  0A  6D  30  5B  1B  64  --  022930
6F  68  53  72  63  6C  63  4E  6D  37  5B  1B  00  0A  44  4E  --  022940
45  42  20  20  6D  30  5B  1B  73  72  65  6B  72  61  4D  77  --  022950
65  72  5F  66  6F  5F  72  65  62  6D  75  6E  20  20  20  47  --  022960
5B  1B  00  0A  64  31  25  3D  73  74  6E  69  6F  70  5F  66  --  022970
1B  00  0A  54  43  74  65  73  65  52  43  32  35  5B  1B  41  --  022980
63  61  65  44  74  65  73  65  52  43  33  36  5B  1B  41  5B  --  022990
63  4E  6D  37  5B  1B  00  0A  54  43  65  74  61  76  69  74  --  0229A0
5B  1B  73  72  65  6B  72  61  4D  77  6F  68  53  72  63  6C  --  0229B0
69  64  72  6F  6F  43  20  64  6C  72  6F  57  20  20  6D  30  --  0229C0
34  5B  1B  20  3A  58  20  20  20  20  2E  73  65  74  61  6E  --  0229D0
5B  1B  66  30  2E  34  25  20  2D  20  66  30  2E  34  25  6D  --  0229E0
6D  34  5B  1B  20  3A  59  20  20  20  20  20  20  20  6D  30  --  0229F0
1B  66  30  2E  34  25  20  2D  20  66  30  2E  34  25  01  FE  --  022A00
68  53  72  63  6C  63  4E  6D  37  5B  1B  00  0A  6D  30  5B  --  022A10
52  20  20  6D  30  5B  1B  73  72  65  6B  72  61  4D  77  6F  --  022A20
20  73  69  20  20  64  32  25  20  74  6E  69  6F  70  66  65  --  022A30
66  30  2E  34  25  28  20  20  20  3A  6E  77  6F  68  73  20  --  022A40
6C  63  4E  6D  37  5B  1B  00  0A  29  66  30  2E  34  25  2C  --  022A50
30  5B  1B  73  72  65  6B  72  61  4D  77  6F  68  53  72  63  --  022A60
20  3D  20  20  52  20  4F  20  52  20  52  20  45  20  20  6D  --  022A70
5F  57  20  20  6E  69  20  20  20  20  29  58  28  78  25  20  --  022A80
20  20  57  4F  44  4E  49  57  5F  59  41  4C  50  53  49  44  --  022A90

37  5B  1B  41  5B  1B  00  0A  29  64  31  25  3D  69  28  20  --  022AA0
72  63  6C  63  4E  6D  37  5B  1B  00  0A  44  4E  45  43  37  --  022AB0
20  47  45  42  20  20  6D  30  5B  1B  72  61  42  74  65  53  --  022AC0
20  20  20  20  2E  64  31  25  20  74  6E  69  6F  50  20  20  --  022AD0
78  65  2E  5D  64  31  25  5B  74  73  69  6C  5F  66  65  72  --  022AE0
37  35  5B  1B  41  5B  1B  00  0A  64  31  25  3D  74  73  69  --  022AF0
6C  61  56  72  61  42  65  6C  62  75  6F  44  74  65  53  43  --  022B00
0A  44  4E  45  43  37  37  5B  1B  41  5B  1B  00  0A  65  75  --  022B10
6F  50  72  65  54  72  63  6C  63  4E  6D  37  5B  1B  0A  00  --  022B20
63  6E  20  20  47  45  42  20  20  6D  30  5B  1B  74  6E  69  --  022B30
25  3D  74  6E  69  6F  70  5F  6B  63  69  70  5F  72  63  6C  --  022B40
72  5F  74  69  64  65  5F  72  63  6C  63  6E  20  20  64  31  --  022B50
6F  5F  72  65  62  6D  75  6E  20  20  64  31  25  3D  66  65  --  022B60
64  31  25  3D  73  74  6E  69  6F  70  5F  66  65  72  5F  66  --  022B70
6F  50  72  65  54  72  63  6C  63  4E  6D  37  5B  1B  00  0A  --  022B80
4F  20  52  20  52  20  45  20  20  6D  30  5B  1B  74  6E  69  --  022B90
20  3A  29  58  28  31  30  36  31  20  20  3D  20  20  52  20  --  022BA0
20  73  65  6F  64  20  65  6C  69  66  20  73  69  68  54  20  --  022BB0
73  20  4B  43  41  4C  42  20  65  76  61  68  20  74  6F  6E  --  022BC0
4E  6D  37  5B  1B  00  0A  6E  6F  69  74  61  72  61  70  65  --  022BD0
6D  30  5B  1B  74  6E  69  6F  50  72  65  54  72  63  6C  63  --  022BE0
66  65  72  5F  74  69  64  65  5F  72  63  6C  63  6E  20  20  --  022BF0
3E  3E  3D  3D  3D  3D  20  45  55  52  54  20  20  3A  01  FE  --  022C00
63  4E  6D  37  5B  1B  00  0A  00  0A  45  53  4C  41  46  20  --  022C10
20  6D  30  5B  1B  74  6E  69  6F  50  72  65  54  72  63  6C  --  022C20
65  67  6E  61  68  63  20  72  6F  6C  6F  63  20  6F  4E  20  --  022C30
6E  69  6F  50  20  20  2E  65  6E  6F  64  20  73  61  77  20  --  022C40
65  20  74  6F  6E  20  73  61  77  20  20  64  31  25  20  74  --  022C50
37  5B  1B  41  5B  1B  00  0A  2E  64  65  74  70  65  63  78  --  022C60
72  63  6C  63  4E  6D  37  5B  1B  00  0A  44  4E  45  43  37  --  022C70
42  20  20  6D  30  5B  1B  66  65  52  65  74  65  6C  65  44  --  022C80
69  6F  70  20  65  74  65  6C  65  44  20  20  20  20  47  45  --  022C90
65  62  6D  75  6E  28  20  20  20  20  64  31  25  20  74  6E  --  022CA0
```

161

```
3D 73 74 6E 69 6F 70 5F 66 65 72 5F 66 6F 5F 72 -- 022CB0
63 6C 63 4E 6D 37 5B 1B 00 0A 00 0A 29 64 31 25 -- 022CC0
20 20 6D 30 5B 1B 66 65 52 65 74 65 6C 65 44 72 -- 022CD0
6F 70 5F 66 65 72 5F 66 6F 5F 72 65 62 6D 75 6E -- 022CE0
3E 3D 3D 3D 3D 20 64 31 25 20 20 3A 73 74 6E 69 -- 022CF0
4E 45 43 37 37 5B 1B 41 5B 1B 0A 64 31 25 20 3E -- 022D00
43 74 65 47 72 63 6C 63 4E 6D 37 5B 1B 00 0A 44 -- 022D10
45 42 20 20 6D 30 5B 1B 65 67 6E 61 68 43 6C 6F -- 022D20
5F 74 69 64 65 5F 72 63 6C 63 6E 20 20 20 20 47 -- 022D30
37 34 5B 1B 41 5B 1B 00 0A 64 31 25 3D 66 65 72 -- 022D40
1B 41 5B 1B 00 0A 64 31 25 20 74 6E 69 6F 70 43 -- 022D50
20 20 64 31 25 3D 65 67 6E 61 68 63 43 31 36 5B -- 022D60
5B 1B 41 5B 1B 00 0A 29 6E 72 75 74 65 72 28 20 -- 022D70
20 20 20 64 31 25 3D 65 67 6E 61 68 63 43 36 36 -- 022D80
52 72 63 6C 63 4E 6D 37 5B 1B 0A 00 0A 44 4E 45 -- 022D90
1B 00 0A 47 45 42 20 20 6D 30 5B 1B 65 67 6E 61 -- 022DA0
30 5B 1B 65 67 6E 61 52 72 63 6C 63 4E 6D 37 5B -- 022DB0
72 20 20 3A 52 20 4F 20 52 20 52 20 45 20 20 6D -- 022DC0
49 20 20 20 20 20 2E 64 36 25 3D 20 65 67 6E 61 -- 022DD0
20 6F 74 20 64 65 67 6E 61 68 63 20 73 69 20 74 -- 022DE0
35 28 20 65 67 6E 61 72 20 74 6C 75 61 66 65 64 -- 022DF0
6E 61 52 43 30 34 5B 1B 41 5B 1B 00 0A 29 01 FE -- 022E00
43 39 36 5B 1B 41 5B 1B 00 0A 64 31 25 3D 65 67 -- 022E10
6D 37 5B 1B 00 0A 29 31 28 20 6E 72 75 74 65 72 -- 022E20
20 20 6D 30 5B 1B 65 67 6E 61 52 72 63 6C 63 4E -- 022E30

72 20 20 20 20 20 2E 64 31 25 20 74 6E 69 6F 50 -- 022E40
69 78 65 2E 5D 64 31 25 5B 74 73 69 6C 5F 66 65 -- 022E50
6C 5F 66 65 72 20 20 20 20 20 64 31 25 3D 74 73 -- 022E60
25 3D 65 67 6E 61 72 2E 5D 64 31 25 5B 74 73 69 -- 022E70
00 0A 44 4E 45 43 37 37 5B 1B 41 5B 1B 0A 64 31 -- 022E80
69 72 74 61 4D 5F 72 63 6C 63 4E 6D 37 5B 1B 0A -- 022E90
20 20 20 20 20 47 45 42 20 20 6D 30 5B 1B 31 78 -- 022EA0
20 20 20 20 2E 64 31 25 20 74 6E 69 6F 50 20 20 -- 022EB0
1B 0A 64 31 25 3D 78 69 72 74 61 6D 5F 64 69 6D -- 022EC0
37 5B 1B 0A 00 0A 44 4E 45 43 37 37 5B 1B 41 5B -- 022ED0
5B 1B 33 78 69 72 74 61 4D 5F 72 63 6C 63 4E 6D -- 022EE0
6F 50 20 20 20 20 20 20 20 20 47 45 42 20 20 6D 30 -- 022EF0
5F 64 69 6D 20 20 20 20 2E 64 31 25 20 74 6E 69 -- 022F00
5B 1B 41 5B 1B 0A 64 31 25 3D 78 69 72 74 61 6D -- 022F10
6C 63 4E 6D 37 5B 1B 0A 00 0A 44 4E 45 43 37 37 -- 022F20
20 20 6D 30 5B 1B 35 78 69 72 74 61 4D 5F 72 63 -- 022F30
20 74 6E 69 6F 50 20 20 20 20 20 20 20 47 45 42 -- 022F40
72 74 61 6D 5F 64 69 6D 20 20 20 20 2E 64 31 25 -- 022F50
45 43 37 37 5B 1B 41 5B 1B 0A 64 31 25 3D 78 69 -- 022F60
4D 5F 72 63 6C 63 4E 6D 37 5B 1B 0A 00 0A 44 4E -- 022F70
20 47 45 42 20 20 6D 30 5B 1B 37 78 69 72 74 61 -- 022F80
2E 64 31 25 20 74 6E 69 6F 50 20 20 20 20 20 20 -- 022F90
25 3D 78 69 72 74 61 6D 5F 64 69 6D 20 20 20 20 -- 022FA0
00 0A 44 4E 45 43 37 37 5B 1B 41 5B 1B 0A 64 31 -- 022FB0
69 72 74 61 4D 5F 72 63 6C 63 4E 6D 37 5B 1B 0A -- 022FC0
20 20 20 20 20 47 45 42 20 20 6D 30 5B 1B 39 78 -- 022FD0
20 20 20 20 2E 64 31 25 20 74 6E 69 6F 50 20 20 -- 022FE0
1B 0A 64 31 25 3D 78 69 72 74 61 6D 5F 64 69 6D -- 022FF0
1B 0A 00 0A 44 4E 45 43 37 37 5B 1B 41 5B 01 FE -- 023000
65 52 65 76 6F 6D 65 52 72 63 6C 63 4E 6D 37 5B -- 023010
6E 20 20 20 20 20 47 45 42 20 20 6D 30 5B 1B 66 -- 023020
25 3D 6B 63 69 70 5F 74 69 64 65 5F 72 63 6C 63 -- 023030
6D 65 52 72 63 6C 63 4E 6D 37 5B 1B 00 0A 64 31 -- 023040
70 65 72 70 20 20 6D 30 5B 1B 66 65 52 65 76 6F -- 023050
```

```
20 20 20 20 64 31 25 3D 67 61 6C 66 5F 65 72 61 -- 023060
65 67 6E 61 68 63 5F 66 65 72 5F 72 63 6C 63 6E -- 023070
66 61 5F 6E 65 65 72 63 73 20 20 20 64 31 25 3D -- 023080
45 20 20 20 64 31 25 3D 67 61 6C 66 5F 72 65 74 -- 023090
64 45 72 63 6C 63 4E 6D 37 5B 1B 0A 00 0A 44 4E -- 0230A0
20 20 47 45 42 20 20 6D 30 5B 1B 66 65 52 74 69 -- 0230B0
69 70 5F 74 69 64 65 5F 72 63 6C 63 6E 20 20 20 -- 0230C0
63 6C 63 4E 6D 37 5B 1B 00 0A 64 31 25 3D 6B 63 -- 0230D0
72 70 20 20 6D 30 5B 1B 66 65 52 74 69 64 45 72 -- 0230E0
20 20 64 31 25 3D 67 61 6C 66 5F 65 72 61 70 65 -- 0230F0
6E 61 68 63 5F 66 65 72 5F 72 63 6C 63 6E 20 20 -- 023100
6E 65 65 72 63 73 20 20 20 20 64 31 25 3D 65 67 -- 023110
20 64 31 25 3D 67 61 6C 66 5F 72 65 74 66 61 5F -- 023120
6C 63 4E 6D 37 5B 1B 0A 00 0A 44 4E 45 20 20 20 -- 023130
6D 30 5B 1B 72 65 6B 72 61 4D 6B 63 69 50 72 63 -- 023140
5F 66 65 72 5F 66 6F 5F 72 65 62 6D 75 6E 20 20 -- 023150
63 6C 63 6E 20 20 64 31 25 3D 73 74 6E 69 6F 70 -- 023160
0A 64 31 25 3D 6B 63 69 70 5F 74 69 64 65 5F 72 -- 023170
61 4D 6B 63 69 50 72 63 6C 63 4E 6D 37 5B 1B 00 -- 023180
3A 72 6F 72 72 45 20 20 6D 30 5B 1B 72 65 6B 72 -- 023190
6F 73 73 61 20 74 6E 65 6D 67 65 73 20 6F 6E 20 -- 0231A0
73 69 68 74 20 68 74 69 77 20 73 65 74 61 69 63 -- 0231B0
0A 44 4E 45 20 20 20 20 2E 77 6F 64 6E 69 77 20 -- 0231C0
69 6F 50 6D 34 5B 1B 43 31 36 5B 1B 41 5B 1B 00 -- 0231D0

73 6F 6F 68 63 20 73 61 77 20 64 31 25 20 74 6E -- 0231E0
5B 1B 00 0A 41 32 5B 1B 00 0A 6D 30 5B 1B 6E 65 -- 0231F0
50 72 63 6C 63 4E 6D 37 5B 1B 00 0A 41 32 01 FE -- 023200
2D 20 20 6D 30 5B 1B 72 65 6B 72 61 4D 6B 63 69 -- 023210
2D 2D 2D 2D 2D 2D 2D 2D 2D 2D 2D 2D 2D 2D 2D 2D -- 023220
2D 2D 2D 2D 2D 2D 2D 2D 2D 2D 2D 2D 2D 2D 2D 2D -- 023230
2D 2D 2D 2D 2D 2D 2D 2D 2D 2D 2D 2D 2D 2D 2D 2D -- 023240
00 0A 44 4E 45 20 20 2D 2D 2D 2D 2D 2D 2D 2D 2D -- 023250
6E 61 52 5F 74 6E 65 72 72 75 43 6D 37 5B 1B 0A -- 023260
45 42 20 20 6D 30 5B 1B 65 75 6C 61 56 5F 65 67 -- 023270
5F 74 69 64 65 5F 72 63 6C 63 6E 20 20 20 20 47 -- 023280
38 34 5B 1B 41 5B 1B 00 0A 64 31 25 3D 66 65 72 -- 023290
5B 1B 64 32 25 20 74 6E 69 6F 50 6D 34 5B 1B 43 -- 0232A0
20 20 64 31 25 3D 65 67 6E 61 72 20 20 3A 6D 30 -- 0232B0
5B 1B 0A 00 0A 44 4E 45 20 20 20 20 20 20 20 20 -- 0232C0
5B 1B 72 6F 43 6C 6F 43 70 75 6B 63 69 50 6D 37 -- 0232D0
30 34 5B 1B 41 5B 1B 00 0A 47 45 42 20 20 6D 30 -- 0232E0
20 64 33 25 3D 4D 20 20 20 20 64 33 25 3D 43 43 -- 0232F0
33 25 3D 42 20 20 20 20 64 33 25 3D 59 20 20 20 -- 023300
6C 6F 43 70 75 6B 63 69 50 6D 37 5B 1B 00 0A 64 -- 023310
6E 69 66 65 64 65 52 20 20 6D 30 5B 1B 72 6F 43 -- 023320
20 20 20 20 20 20 20 72 61 42 72 6F 6C 6F 43 65 -- 023330
65 20 72 20 6F 20 66 20 65 20 62 20 20 20 20 20 -- 023340
20 74 20 66 20 61 43 30 37 5B 1B 41 5B 1B 00 0A -- 023350
43 70 75 6B 63 69 50 6D 37 5B 1B 00 0A 72 20 65 -- 023360
4E 45 20 20 20 20 20 6D 30 5B 1B 72 6F 43 6C 6F -- 023370
43 5F 77 6F 64 6E 69 57 6D 37 5B 1B 0A 00 0A 44 -- 023380
20 20 6D 30 5B 1B 65 72 6F 66 65 42 5F 72 63 6C -- 023390
20 6F 4E 43 34 34 5B 1B 41 5B 1B 00 0A 47 45 42 -- 0233A0
61 6C 70 73 69 64 20 73 69 20 77 6F 64 6E 69 77 -- 0233B0
44 4E 45 20 20 20 20 20 20 20 20 20 2E 64 65 79 -- 0233C0
69 57 20 64 6C 4F 43 39 33 5B 1B 41 5B 1B 00 0A -- 0233D0
64 34 25 3A 58 6D 34 5B 1B 20 20 3A 77 6F 64 6E -- 0233E0
6D 34 5B 1B 20 20 20 6D 30 5B 1B 64 34 25 2D 20 -- 0233F0
6D 30 5B 1B 64 34 25 2D 20 64 34 25 3A 59 01 FE -- 023400
```

```
63 6C 43 5F 77 6F 64 6E 69 57 6D 37 5B 1B 00 0A -- 023410
20 45 20 20 6D 30 5B 1B 65 72 6F 66 65 42 5F 72 -- 023420
58 28 78 25 20 20 3D 20 20 52 20 4F 20 52 20 52 -- 023430
72 63 53 72 63 6C 43 20 20 6E 69 20 20 20 20 29 -- 023440
69 57 6D 37 5B 1B 00 0A 4F 49 64 6E 57 6E 65 65 -- 023450
65 72 6F 66 65 42 5F 72 63 6C 43 5F 77 6F 64 6E -- 023460
6F 64 6E 69 77 20 20 64 6C 4F 20 20 6D 30 5B 1B -- 023470
20 2E 64 65 73 61 72 65 20 20 73 61 77 20 20 77 -- 023480
61 6C 66 5F 77 64 6E 77 20 20 20 20 20 20 20 20 -- 023490
45 20 20 20 20 20 20 20 20 20 20 20 20 30 3D 67 -- 0234A0
79 61 6C 70 73 69 44 6D 37 5B 1B 0A 00 0A 44 4E -- 0234B0
6D 30 5B 1B 65 72 6F 66 65 42 5F 72 63 6C 43 5F -- 0234C0
66 69 6E 75 20 20 20 20 20 20 20 47 45 42 20 20 -- 0234D0
5B 1B 00 0A 64 31 25 3D 67 61 6C 66 5F 64 65 69 -- 0234E0
20 49 20 20 20 44 6D 34 5B 1B 43 32 35 5B 1B 41 -- 0234F0
20 41 20 20 20 4C 20 20 20 50 20 20 20 53 20 20 -- 023500
6D 37 5B 1B 00 0A 41 5B 1B 6D 30 5B 1B 59 20 20 -- 023510
66 65 42 5F 72 63 6C 43 5F 79 61 6C 70 73 69 44 -- 023520
61 6E 69 67 69 72 6F 20 20 6D 30 5B 1B 65 72 6F -- 023530
20 20 20 20 64 31 25 3D 6E 65 65 72 63 73 5F 6C -- 023540
31 25 3D 67 61 6C 66 5F 68 73 65 72 66 65 72 20 -- 023550
1B 00 0A 44 4E 45 43 37 37 5B 1B 41 5B 1B 0A 64 -- 023560
3D 74 72 61 70 5F 62 66 63 43 32 36 5B 1B 41 5B -- 023570

46 43 5F 77 6F 68 53 6D 37 5B 1B 00 0A 64 31 25 -- 023580
5F 6E 20 20 20 20 47 45 42 20 20 6D 30 5B 1B 42 -- 023590
33 5B 1B 41 5B 1B 00 0A 64 31 25 3D 66 6C 61 68 -- 0235A0
20 6D 65 6D 62 66 74 65 73 67 6D 34 5B 1B 43 36 -- 0235B0
6F 68 53 6D 37 5B 1B 00 0A 6D 30 5B 1B 29 34 28 -- 0235C0
52 20 52 20 45 20 20 6D 30 5B 1B 42 46 43 5F 77 -- 0235D0
20 20 29 58 28 78 25 20 20 3D 20 20 52 20 4F 20 -- 0235E0
28 20 6D 65 6D 62 66 74 65 73 67 20 20 6E 69 20 -- 0235F0
5B 1B 43 38 35 5B 1B 41 5B 1B 00 0A 29 34 01 FE -- 023600
1B 29 35 28 20 6D 65 6D 62 66 74 65 73 67 6D 34 -- 023610
46 43 5F 77 6F 68 53 6D 37 5B 1B 00 0A 6D 30 5B -- 023620
52 20 4F 20 52 20 52 20 45 20 20 6D 30 5B 1B 42 -- 023630
20 6E 69 20 20 20 29 58 28 78 25 20 20 3D 20 20 -- 023640
00 0A 29 35 28 20 6D 65 6D 62 66 74 65 73 67 20 -- 023650
5B 1B 0A 00 0A 44 4E 45 43 37 37 5B 1B 41 5B 1B -- 023660
43 6C 6F 43 65 74 61 64 70 55 5F 77 65 4E 6D 37 -- 023670
6D 5F 61 69 76 5F 74 63 20 20 6D 30 5B 1B 72 6F -- 023680
6C 61 63 6F 6C 6C 20 20 20 64 31 25 3D 6B 73 61 -- 023690
66 6F 5F 72 65 62 6D 75 6E 20 20 20 64 31 25 3D -- 0236A0
20 64 31 25 3D 73 74 6E 69 6F 70 5F 66 65 72 5F -- 0236B0
25 3D 67 61 6C 66 5F 65 72 61 70 65 72 70 20 20 -- 0236C0
61 64 70 55 5F 77 65 4E 6D 37 5B 1B 00 0A 64 31 -- 0236D0
72 70 20 20 6D 30 5B 1B 72 6F 43 6C 6F 43 65 74 -- 0236E0
65 6C 69 61 66 20 73 6E 6F 69 74 61 72 61 70 65 -- 0236F0
4C 4F 43 20 20 4F 4E 20 20 2A 2A 00 20 20 2E 64 -- 023700
20 20 4E 4F 49 54 43 45 52 52 4F 43 20 20 52 4F -- 023710
1B 00 0A 2A 2A 20 20 45 4E 4F 44 20 20 53 41 57 -- 023720
6C 6F 43 65 74 61 64 70 55 5F 77 65 4E 6D 37 5B -- 023730
6F 6C 6F 63 20 6F 6E 20 20 6D 30 5B 1B 72 6F 43 -- 023740
00 20 20 2E 73 74 6E 69 6F 70 20 66 65 72 20 72 -- 023750
43 20 20 52 4F 4C 4F 43 20 20 4F 4E 20 20 2A 2A -- 023760
20 20 53 41 57 20 20 4E 4F 49 54 43 45 52 52 4F -- 023770
65 4E 6D 37 5B 1B 00 0A 2A 2A 20 20 45 4E 4F 44 -- 023780
5B 1B 72 6F 43 6C 6F 43 65 74 61 64 70 55 5F 77 -- 023790
74 61 64 70 75 20 65 73 6F 6F 68 43 20 20 6D 30 -- 0237A0
4F 52 47 45 52 4F 46 20 20 3A 67 61 6C 66 5F 65 -- 0237B0
```

```
44 4E 55 4F 52 47 4B 43 41 42 20 2F 20 44 4E 55 -- 0237C0
5B 1B 00 64 25 00 0A 29 31 2F 30 28 20 20 20 20 -- 0237D0
6D 37 5B 1B 00 0A 64 31 25 43 39 37 5B 1B 41 32 -- 0237E0
72 6F 43 6C 6F 43 65 74 61 64 70 55 5F 77 65 4E -- 0237F0
77 20 75 6F 79 20 6F 44 20 20 6D 30 5B 1B 01 FE -- 023800
50 20 65 68 74 20 65 65 73 20 6F 74 20 74 6E 61 -- 023810
72 6F 74 61 63 69 64 6E 49 20 73 73 65 63 6F 72 -- 023820
41 32 5B 1B 00 64 25 00 0A 29 31 2F 30 28 20 20 -- 023830
65 4E 6D 37 5B 1B 00 0A 64 31 25 43 39 37 5B 1B -- 023840
5B 1B 72 6F 43 6C 6F 43 65 74 61 64 70 55 5F 77 -- 023850
74 61 64 70 75 20 65 73 6F 6F 68 43 20 20 6D 30 -- 023860
20 20 77 65 4E 20 2F 20 64 6C 4F 20 20 20 3A 65 -- 023870
5B 1B 41 32 5B 1B 00 64 25 00 0A 29 31 2F 30 28 -- 023880
5F 77 65 4E 6D 37 5B 1B 00 0A 64 31 25 43 39 37 -- 023890
6D 30 5B 1B 72 6F 43 6C 6F 43 65 74 61 64 70 55 -- 0238A0
62 6F 4A 79 61 6C 70 73 69 44 74 69 61 57 20 20 -- 0238B0
65 74 61 64 70 55 5F 77 65 4E 6D 37 5B 1B 00 0A -- 0238C0
6C 6C 69 46 20 20 6D 30 5B 1B 72 6F 43 6C 6F 43 -- 0238D0
43 33 33 5B 1B 41 5B 1B 00 0A 6B 63 61 74 73 20 -- 0238E0
66 43 39 33 5B 1B 41 5B 1B 00 0A 6B 63 61 74 53 -- 0238F0
65 70 6F 74 63 20 20 20 20 20 2E 64 65 6C 6C 69 -- 023900
6D 37 5B 1B 00 0A 64 31 25 3D 67 61 6C 66 5F 6E -- 023910

72 6F 43 6C 6F 43 65 74 61 64 70 55 5F 77 65 4E -- 023920
00 0A 65 6C 69 66 20 20 54 43 20 20 6D 30 5B 1B -- 023930
6F 6C 63 20 20 73 61 77 43 38 32 5B 1B 41 5B 1B -- 023940
6E 65 70 6F 74 63 20 20 20 20 20 20 2E 64 65 73 -- 023950
4E 6D 37 5B 1B 00 0A 64 31 25 3D 67 61 6C 66 5F -- 023960
1B 72 6F 43 6C 6F 43 65 74 61 64 70 55 5F 77 65 -- 023970
67 61 6C 66 5F 65 74 61 64 70 75 20 20 6D 30 5B -- 023980
20 6C 6C 61 43 20 20 20 20 20 20 20 64 31 25 3D -- 023990
78 45 64 6E 41 65 74 61 64 70 55 64 61 6F 4C 20 -- 0239A0
1B 00 64 70 75 72 63 6C 63 00 0A 2E 54 43 74 69 -- 0239B0
6C 6F 43 65 74 61 64 70 55 5F 77 65 4E 6D 37 5B -- 0239C0
5F 65 74 61 64 70 75 20 20 6D 30 5B 1B 72 6F 43 -- 0239D0
53 55 53 20 20 20 20 20 64 31 25 3D 67 61 6C 66 -- 0239E0
5B 1B 00 64 6E 65 70 73 75 73 00 0A 44 4E 45 50 -- 0239F0
6F 43 65 74 61 64 70 55 5F 77 65 4E 6D 37 01 FE -- 023A00
20 52 20 52 20 45 20 20 6D 30 5B 1B 72 6F 43 6C -- 023A10
6E 69 20 20 29 58 28 78 25 20 3D 20 20 52 20 4F -- 023A20
1B 41 5B 1B 00 0A 42 4F 4A 44 41 4F 4C 53 20 20 -- 023A30
4A 79 61 6C 70 73 69 44 74 69 78 45 43 37 34 5B -- 023A40
61 6F 6C 6D 43 34 36 5B 1B 41 5B 1B 00 0A 62 6F -- 023A50
6C 63 00 0A 44 50 55 52 43 4C 43 20 62 6F 6A 64 -- 023A60
70 55 5F 77 65 4E 6D 37 5B 1B 00 64 70 75 72 63 -- 023A70
20 20 6D 30 5B 1B 72 6F 43 6C 6F 43 65 74 61 64 -- 023A80
3D 20 65 74 61 64 70 75 5F 79 61 6C 70 73 69 64 -- 023A90
45 52 20 20 20 20 20 20 20 20 2E 45 55 52 54 20 -- 023AA0
37 5B 1B 00 65 6D 75 73 65 72 00 0A 45 4D 55 53 -- 023AB0
6F 43 6C 6F 43 65 74 61 64 70 55 5F 77 65 4E 6D -- 023AC0
52 20 4F 20 52 20 52 20 45 20 20 6D 30 5B 1B 72 -- 023AD0
53 20 20 6E 69 20 20 29 58 28 78 25 20 3D 20 20 -- 023AE0
77 65 4E 6D 37 5B 1B 00 0A 42 4F 4A 44 41 4F 4C -- 023AF0
30 5B 1B 72 6F 43 6C 6F 43 65 74 61 64 70 55 5F -- 023B00
20 3A 67 61 6C 66 5F 65 74 61 64 70 75 20 20 6D -- 023B10
78 45 20 20 2E 65 75 6C 61 76 20 67 6E 6F 72 77 -- 023B20
53 49 44 43 30 37 5B 1B 41 5B 1B 00 0A 2E 74 69 -- 023B30
70 55 5F 77 65 4E 6D 37 5B 1B 00 0A 59 41 4C 50 -- 023B40
20 20 6D 30 5B 1B 72 6F 43 6C 6F 43 65 74 61 64 -- 023B50
4E 6D 37 5B 1B 00 0A 6C 61 62 6F 6C 47 74 65 53 -- 023B60
```

```
1B 72 6F 43 6C 6F 43 65 74 61 64 70 55 5F 77 65  --  023B70
2D 2D 2D 2D 2D 2D 2D 2D 2D 2D 2D 20 20 6D 30 5B  --  023B80
2D 2D 2D 2D 2D 2D 2D 2D 2D 2D 2D 2D 2D 2D 2D 2D  --  023B90
2D 2D 2D 2D 2D 2D 2D 2D 2D 2D 2D 2D 2D 2D 2D 2D  --  023BA0
20 20 2D 2D 2D 2D 2D 2D 2D 2D 2D 2D 2D 2D 2D 2D  --  023BB0
73 61 4D 5F 74 65 47 6D 37 5B 1B 00 0A 44 4E 45  --  023BC0
45 42 20 20 6D 30 5B 1B 70 73 6E 61 72 54 5F 6B  --  023BD0
5F 6B 73 61 6D 43 35 33 5B 1B 41 5B 1B 00 0A 47  --  023BE0
54 20 3D 20 65 64 6F 6D 5F 79 61 6C 70 73 69 64  --  023BF0
50 59 54 5F 54 4E 45 52 41 50 53 4E 41 52 01 FE  --  023C00
5F 6B 73 61 6D 43 35 33 5B 1B 41 5B 1B 00 0A 45  --  023C10
4D 20 3D 20 65 64 6F 6D 5F 79 61 6C 70 73 69 64  --  023C20
37 5B 1B 41 5B 1B 00 0A 45 50 59 54 5F 4B 53 41  --  023C30
5F 6B 72 61 4D 6D 37 5B 1B 00 0A 44 4E 45 43 37  --  023C40
50 5F 6F 54 5F 6E 65 65 72 63 53 5F 79 70 6F 43  --  023C50
75 43 74 65 47 20 64 31 25 20 20 6D 30 5B 1B 4D  --  023C60
5B 1B 41 5B 1B 00 0A 43 44 20 3A 74 6E 65 72 72  --  023C70
41 43 35 34 5B 1B 41 5B 1B 00 0A 43 57 43 31 34  --  023C80
00 0A 72 6F 74 70 69 72 63 73 65 44 6D 50 64 64  --  023C90
65 72 63 53 79 70 6F 43 43 32 36 5B 1B 41 5B 1B  --  023CA0
43 37 37 5B 1B 41 5B 1B 00 0A 6D 50 6F 54 6E 65  --  023CB0

65 42 72 63 6C 43 6D 37 5B 1B 0A 00 0A 44 4E 45  --  023CC0
45 42 20 20 6D 30 5B 1B 6D 6F 6F 5A 65 72 6F 66  --  023CD0
72 5F 66 6F 5F 72 65 62 6D 75 6E 20 20 20 20 47  --  023CE0
1B 00 0A 64 31 25 3D 73 74 6E 69 6F 70 5F 66 65  --  023CF0
5F 72 63 6C 43 5F 79 61 6C 70 73 69 44 6D 37 5B  --  023D00
6F 20 6C 20 63 20 20 6D 30 5B 1B 72 65 74 66 41  --  023D10
20 20 20 20 54 20 43 20 20 20 20 20 65 20 73 20  --  023D20
6C 43 6D 37 5B 1B 00 0A 65 20 6C 20 69 20 66 20  --  023D30
6D 30 5B 1B 6D 6F 6F 5A 65 72 6F 66 65 42 72 63  --  023D40
2D 2D 2D 2D 2D 2D 2D 2D 2D 2D 2D 2D 2D 20 20  --  023D50
2D 2D 2D 2D 2D 2D 2D 2D 2D 2D 2D 2D 2D 2D 2D 2D  --  023D60
2D 2D 2D 2D 2D 2D 2D 2D 2D 2D 2D 2D 2D 2D 2D 2D  --  023D70
45 20 20 2D 2D 2D 2D 2D 2D 2D 2D 2D 2D 2D 2D 2D  --  023D80
45 5F 72 63 6C 63 4E 6D 37 5B 1B 0A 00 0A 44 4E  --  023D90
6D 30 5B 1B 73 72 65 6B 72 61 4D 5F 65 73 61 72  --  023DA0
63 43 38 33 5B 1B 41 5B 1B 00 0A 47 45 42 20 20  --  023DB0
20 20 3A 67 61 6C 66 5F 74 69 64 65 5F 72 63 6C  --  023DC0
20 20 20 3E 3E 3D 3D 3D 3D 3D 3D 20 20 20 31 20  --  023DD0
5F 72 63 6C 63 43 37 33 5B 1B 41 5B 1B 00 0A 30  --  023DE0
31 20 20 20 3A 67 61 6C 63 5F 65 74 65 6C 65 64  --  023DF0
20 20 20 3E 3E 3D 3D 3D 3D 3D 3D 20 20 20 01 FE  --  023E00
61 72 45 5F 72 63 6C 63 6D 37 5B 1B 00 0A 30  --  023E10
20 20 6D 30 5B 1B 73 72 6B 72 61 4D 5F 65 73  --  023E20
2D 2D 2D 2D 2D 2D 2D 2D 2D 2D 2D 2D 2D 2D 2D  --  023E30
2D 2D 2D 2D 2D 2D 2D 2D 2D 2D 2D 2D 2D 2D 2D  --  023E40
2D 2D 2D 2D 2D 2D 2D 2D 2D 2D 2D 2D 2D 2D 2D  --  023E50
37 5B 1B 00 0A 44 4E 45 2C 20 2D 2D 2D 2D 2D 2D  --  023E60
20 6D 30 5B 1B 42 46 43 3F 68 63 74 69 77 53 6D  --  023E70
5B 1B 00 0A 64 31 25 3D 69 20 20 20 47 45 42 20  --  023E80
42 46 43 20 20 3A 79 70 5F 63 43 34 32 5B 1B 41  --  023E90
20 42 46 43 20 3E 3E 3D 3D 3D 20 29 31 28 20  --  023EA0
70 6F 63 43 34 32 5B 1B 41 5B 1B 00 0A 29 32 28  --  023EB0
3D 3D 3D 3D 20 29 32 28 20 42 46 43 20 20 3A 79  --  023EC0
1B 41 5B 1B 00 0A 29 31 28 20 42 46 43 20 3E 3E  --  023ED0
6E 6F 72 77 20 20 3A 72 6F 72 72 45 43 30 34 5B  --  023EE0
31 20 65 62 20 74 73 75 6D 28 20 20 2E 69 20 67  --  023EF0
5B 1B 00 0A 44 4E 45 20 20 20 29 32 20 72 6F 20  --  023F00
28 20 73 6E 61 72 54 61 6D 44 43 30 36 5B 1B 41  --  023F10
```

```
68 63 74 69 77 53 6D 37 5B 1B 00 0A 29 74 75 70 -- 023F20
20 72 6F 72 72 45 20 20 6D 30 5B 1B 42 46 43 5F -- 023F30
54 61 6D 44 20 6E 69 20 20 20 29 58 28 78 25 3D -- 023F40
0A 2E 6E 72 75 74 65 52 20 20 20 2E 73 6E 61 72 -- 023F50
00 01 00 0A 44 4E 45 43 37 37 5B 1B 41 5B 1B 00 -- 023F60
00 02 00 01 00 00 00 00 00 00 00 00 00 00 00 00 -- 023F70
00 00 00 00 00 00 00 01 00 00 00 02 00 08 00 04 -- 023F80
00 01 00 6C 00 00 00 01 00 01 00 00 00 00 00 01 -- 023F90
00 00 00 00 00 00 00 00 00 00 00 00 00 00 03 00 -- 023FA0
00 00 00 00 00 00 00 00 00 00 00 00 00 00 00 00 -- 023FB0
00 00 00 00 00 00 00 00 00 00 00 00 00 00 00 00 -- 023FC0
00 00 00 00 00 00 00 00 00 00 00 00 00 00 00 00 -- 023FD0
00 00 00 00 00 00 00 00 00 00 00 00 00 00 00 00 -- 023FE0
00 00 00 00 00 00 00 00 00 00 00 00 00 00 00 00 -- 023FF0
00 00 00 00 00 00 00 00 00 00 00 00 00 00 01 FE -- 024000
00 00 00 00 00 00 00 00 00 00 00 00 00 00 00 00 -- 024010
00 00 00 00 00 00 00 00 00 00 00 00 00 00 00 00 -- 024020
00 00 00 00 00 00 00 00 00 00 00 00 00 00 00 00 -- 024030
00 00 00 00 00 00 00 00 00 00 00 00 00 00 00 00 -- 024040
00 00 00 00 00 00 00 00 00 00 00 00 00 00 00 00 -- 024050

00 00 00 00 00 00 00 00 00 00 00 00 00 00 00 00 -- 024060
00 00 00 00 00 00 00 00 00 00 00 00 00 00 00 00 -- 024070
00 00 00 00 00 00 00 00 00 00 00 00 00 00 00 00 -- 024080
00 00 00 00 00 00 00 00 00 00 00 00 00 00 00 00 -- 024090
00 00 00 00 00 00 00 00 00 00 00 00 00 00 00 00 -- 0240A0
00 00 00 00 00 00 00 00 00 00 00 00 00 00 00 00 -- 0240B0
00 00 00 00 00 00 00 00 00 00 00 00 00 00 00 00 -- 0240C0
00 00 00 00 00 00 00 00 00 00 00 00 00 00 00 00 -- 0240D0
00 00 00 00 00 00 00 00 00 00 00 00 00 00 00 00 -- 0240E0
00 00 00 00 00 00 00 00 00 00 00 00 00 00 00 00 -- 0240F0
00 00 00 00 00 00 00 00 00 00 00 00 00 00 00 00 -- 024100
00 00 00 00 00 00 00 00 00 00 00 00 00 00 00 00 -- 024110
00 00 00 00 00 00 00 00 00 00 00 00 00 00 00 00 -- 024120
00 00 00 00 00 00 00 00 00 00 00 00 00 00 00 00 -- 024130
00 00 00 00 00 00 00 00 00 00 00 00 00 00 00 00 -- 024140
00 00 00 00 00 00 00 00 00 00 00 00 00 00 00 00 -- 024150
00 00 00 00 00 00 00 00 00 00 00 00 00 00 00 00 -- 024160
00 00 00 00 00 00 00 00 00 00 00 00 00 00 00 00 -- 024170
00 00 00 00 00 00 00 00 00 00 00 00 00 00 00 00 -- 024180
00 00 00 00 00 00 00 00 00 00 00 00 00 00 00 00 -- 024190
00 00 00 00 00 00 00 00 00 00 00 00 00 00 00 00 -- 0241A0
00 00 00 00 00 00 00 00 00 00 00 00 00 00 00 00 -- 0241B0
00 00 00 00 00 00 00 00 00 00 00 00 00 00 00 00 -- 0241C0
00 00 00 00 00 00 00 00 00 00 00 00 00 00 00 00 -- 0241D0
00 00 00 00 00 00 00 00 00 00 00 00 00 00 00 00 -- 0241E0
00 00 00 00 00 00 00 00 00 00 00 00 00 00 00 00 -- 0241F0
00 00 00 00 00 00 00 00 00 00 00 00 00 00 01 FE -- 024200
00 00 00 00 00 00 00 00 00 00 00 00 00 00 00 00 -- 024210
00 00 00 00 00 00 00 00 00 00 00 00 00 00 00 00 -- 024220
00 00 00 00 00 00 00 00 00 00 00 00 00 00 00 00 -- 024230
00 00 00 00 00 00 00 00 00 00 00 00 00 00 00 00 -- 024240
00 00 00 00 00 00 00 00 00 00 00 00 00 00 00 00 -- 024250
00 00 00 00 00 00 00 00 00 00 00 00 00 00 00 00 -- 024260
00 00 00 00 00 00 00 00 00 00 00 00 00 00 00 00 -- 024270
00 00 00 00 00 00 00 00 00 00 00 00 00 00 00 00 -- 024280
00 00 00 00 00 00 00 00 00 00 00 00 00 00 00 00 -- 024290
00 00 00 00 00 00 00 00 00 00 00 00 00 00 00 00 -- 0242A0
00 00 00 00 00 00 00 00 00 00 00 00 00 00 00 00 -- 0242B0
00 00 00 00 00 00 00 00 00 00 00 00 00 00 00 00 -- 0242C0
```

```
00 00 00 00 00 00 00 00 00 00 00 00 00 00 00 00 -- 0242D0
00 00 00 00 00 00 00 00 00 00 00 00 00 00 00 00 -- 0242E0
00 00 00 00 00 00 00 00 00 00 00 00 00 00 00 00 -- 0242F0
00 00 00 00 00 00 00 00 00 00 00 00 00 00 00 00 -- 024300
00 00 00 00 00 00 00 00 00 00 00 00 00 00 00 00 -- 024310
00 00 00 00 00 00 00 00 00 00 00 00 00 00 00 00 -- 024320
00 00 00 00 00 00 00 00 00 00 00 00 00 00 00 00 -- 024330
00 00 00 00 00 00 00 00 00 00 00 00 00 00 00 00 -- 024340
00 00 00 00 00 00 00 00 00 00 00 00 00 00 00 00 -- 024350
00 00 00 00 00 00 00 00 00 00 00 00 00 00 00 00 -- 024360
00 00 00 00 00 00 00 00 00 00 00 00 00 00 00 00 -- 024370
00 00 00 00 00 00 00 00 00 00 00 00 00 00 00 00 -- 024380
00 00 00 00 00 00 00 00 00 00 00 00 00 00 00 00 -- 024390
00 00 00 00 00 00 00 00 00 00 00 00 00 00 00 00 -- 0243A0
00 00 00 00 00 00 00 00 00 00 00 00 00 00 00 00 -- 0243B0
00 00 00 00 00 00 00 00 00 00 00 00 00 00 00 00 -- 0243C0
00 00 00 00 00 00 00 00 00 00 00 00 00 00 00 00 -- 0243D0
00 00 00 00 00 00 00 00 00 00 00 00 00 00 00 00 -- 0243E0
00 00 00 00 00 00 00 00 00 00 00 00 00 00 00 00 -- 0243F0

00 00 00 00 00 00 00 00 00 00 00 00 00 00 01 FE -- 024400
00 00 00 00 00 00 00 00 00 00 00 00 00 00 00 00 -- 024410
00 00 00 00 00 00 00 00 00 00 00 00 00 00 00 00 -- 024420
00 00 00 00 00 00 00 00 00 00 00 00 00 00 00 00 -- 024430
00 00 00 00 00 00 00 00 00 00 00 00 00 00 00 00 -- 024440
00 00 00 00 00 00 00 00 00 00 00 00 00 00 00 00 -- 024450
00 00 00 00 00 00 00 00 00 00 00 00 00 00 00 00 -- 024460
00 00 00 00 00 00 00 00 00 00 00 00 00 00 00 00 -- 024470
00 00 00 00 00 00 00 00 00 00 00 00 00 00 00 00 -- 024480
00 00 00 00 00 00 00 00 00 00 00 00 00 00 00 00 -- 024490
00 00 00 00 00 00 00 00 00 00 00 00 00 00 00 00 -- 0244A0
00 00 00 00 00 00 00 00 00 00 00 00 00 00 00 00 -- 0244B0
00 00 00 00 00 00 00 00 00 00 00 00 00 00 00 00 -- 0244C0
00 00 00 00 00 00 00 00 00 00 00 00 00 00 00 00 -- 0244D0
00 00 00 00 00 00 00 00 00 00 00 00 00 00 00 00 -- 0244E0
00 00 00 00 00 00 00 00 00 00 00 00 00 00 00 00 -- 0244F0
00 00 00 00 00 00 00 00 00 00 00 00 00 00 00 00 -- 024500
00 00 00 00 00 00 00 00 00 00 00 00 00 00 00 00 -- 024510
00 00 00 00 00 00 00 00 00 00 00 00 00 00 00 00 -- 024520
00 00 00 00 00 00 00 00 00 00 00 00 00 00 00 00 -- 024530
00 00 00 00 00 00 00 00 00 00 00 00 00 00 00 00 -- 024540
00 00 00 00 00 00 00 00 00 00 00 00 00 00 00 00 -- 024550
00 00 00 00 00 00 00 00 00 00 00 00 00 00 00 00 -- 024560
00 00 00 00 00 00 00 00 00 00 00 00 00 00 00 00 -- 024570
00 00 00 00 00 00 00 00 00 00 00 00 00 00 00 00 -- 024580
00 00 00 00 00 00 00 00 00 00 00 00 00 00 00 00 -- 024590
00 00 00 00 00 00 00 00 00 00 00 00 00 00 00 00 -- 0245A0
00 00 00 00 00 00 00 00 00 00 00 00 00 00 00 00 -- 0245B0
00 00 00 00 00 00 00 00 00 00 00 00 00 00 00 00 -- 0245C0
00 00 00 00 00 00 00 00 00 00 00 00 00 00 00 00 -- 0245D0
00 00 00 00 00 00 00 00 00 00 00 00 00 00 00 00 -- 0245E0
00 00 00 00 00 00 00 00 00 00 00 00 00 00 00 00 -- 0245F0
00 00 00 00 00 00 00 00 00 00 00 00 00 00 01 FE -- 024600
00 00 00 00 00 00 00 00 00 00 00 00 00 00 00 00 -- 024610
00 00 00 00 00 00 00 00 00 00 00 00 00 00 00 00 -- 024620
00 00 00 00 00 00 00 00 00 00 00 00 00 00 00 00 -- 024630
00 00 00 00 00 00 00 00 00 00 00 00 00 00 00 00 -- 024640
00 00 00 00 00 00 00 00 00 00 00 00 00 00 00 00 -- 024650
00 00 00 00 00 00 00 00 00 00 00 00 00 00 00 00 -- 024660
00 00 00 00 00 00 00 00 00 00 00 00 00 00 00 00 -- 024670
```

```
00 00 00 00 00 00 00 00 00 00 00 00 00 00 00 00 -- 024680
00 00 00 00 00 00 00 00 00 00 00 00 00 00 00 00 -- 024690
00 00 00 00 00 00 00 00 00 00 00 00 00 00 00 00 -- 0246A0
00 00 00 00 00 00 00 00 00 00 00 00 00 00 00 00 -- 0246B0
00 00 00 00 00 00 00 00 00 00 00 00 00 00 00 00 -- 0246C0
00 00 00 00 00 00 00 00 00 00 00 00 00 00 00 00 -- 0246D0
00 00 00 00 00 00 00 00 00 00 00 00 00 00 00 00 -- 0246E0
00 00 00 00 00 00 00 00 00 00 00 00 00 00 00 00 -- 0246F0
00 00 00 00 00 00 00 00 00 00 00 00 00 00 00 00 -- 024700
00 00 00 00 00 00 00 00 00 00 00 00 00 00 00 00 -- 024710
00 00 00 00 00 00 00 00 00 00 00 00 00 00 00 00 -- 024720
00 00 00 00 00 00 00 00 00 00 00 00 00 00 00 00 -- 024730
00 00 00 00 00 00 00 00 00 00 00 00 00 00 00 00 -- 024740
00 00 00 00 00 00 00 00 00 00 00 00 00 00 00 00 -- 024750
00 00 00 00 00 00 00 00 00 00 00 00 00 00 00 00 -- 024760
00 00 00 00 00 00 00 00 00 00 00 00 00 00 00 00 -- 024770
00 00 00 00 00 00 00 00 00 00 00 00 00 00 00 00 -- 024780
00 00 00 00 00 00 00 00 00 00 00 00 00 00 00 00 -- 024790

00 00 00 00 00 00 00 00 00 00 00 00 00 00 00 00 -- 0247A0
00 00 00 00 00 00 00 00 00 00 00 00 00 00 00 00 -- 0247B0
00 00 00 00 00 00 00 00 00 00 00 00 00 00 00 00 -- 0247C0
00 00 00 00 00 00 00 00 00 00 00 00 00 00 00 00 -- 0247D0
00 00 00 00 00 00 00 00 00 00 00 00 00 00 00 00 -- 0247E0
00 00 00 00 00 00 00 00 00 00 00 00 00 00 00 00 -- 0247F0
00 00 00 00 00 00 00 00 00 00 00 00 00 00 01 FE -- 024800
00 00 00 00 00 00 00 00 00 00 00 00 00 00 00 00 -- 024810
00 00 00 00 00 00 00 00 00 00 00 00 00 00 00 00 -- 024820
00 00 00 00 00 00 00 00 00 00 00 00 00 00 00 00 -- 024830
00 00 00 00 00 00 00 00 00 00 00 00 00 00 00 00 -- 024840
00 00 00 00 00 00 00 00 00 00 00 00 00 00 00 00 -- 024850
00 00 00 00 00 00 00 00 00 00 00 00 00 00 00 00 -- 024860
00 00 00 00 00 00 00 00 00 00 00 00 00 00 00 00 -- 024870
00 00 00 00 00 00 00 00 00 00 00 00 00 00 00 00 -- 024880
00 00 00 00 00 00 00 00 00 00 00 00 00 00 00 00 -- 024890
00 00 00 00 00 00 00 00 00 00 00 00 00 00 00 00 -- 0248A0
00 00 00 00 00 00 00 00 00 00 00 00 00 00 00 00 -- 0248B0
00 00 00 00 00 00 00 00 00 00 00 00 00 00 00 00 -- 0248C0
00 00 00 00 00 00 00 00 00 00 00 00 00 00 00 00 -- 0248D0
00 00 00 00 00 00 00 00 00 00 00 00 00 00 00 00 -- 0248E0
00 00 00 00 00 00 00 00 00 00 00 00 00 00 00 00 -- 0248F0
00 00 00 00 00 00 00 00 00 00 00 00 00 00 00 00 -- 024900
00 00 00 00 00 00 00 00 00 00 00 00 00 00 00 00 -- 024910
00 00 00 00 00 00 00 00 00 00 00 00 00 00 00 00 -- 024920
00 00 00 00 00 00 00 00 00 00 00 00 00 00 00 00 -- 024930
00 00 00 00 00 00 00 00 00 00 00 00 00 00 00 00 -- 024940
00 00 00 00 00 00 00 00 00 00 00 00 00 00 00 00 -- 024950
00 00 00 00 00 00 00 00 00 00 00 00 00 00 00 00 -- 024960
00 00 00 00 00 00 00 00 00 00 00 00 00 00 00 00 -- 024970
00 00 00 00 00 00 00 00 00 00 00 00 00 00 00 00 -- 024980
00 00 00 00 00 00 00 00 00 00 00 00 00 00 00 00 -- 024990
00 00 00 00 00 00 00 00 00 00 00 00 00 00 00 00 -- 0249A0
00 00 00 00 00 00 00 00 00 00 00 00 00 00 00 00 -- 0249B0
00 00 00 00 00 00 00 00 00 00 00 00 00 00 00 00 -- 0249C0
00 00 00 00 00 00 00 00 00 00 00 00 00 00 00 00 -- 0249D0
00 00 00 00 00 00 00 00 00 00 00 00 00 00 00 00 -- 0249E0
00 00 00 00 00 00 00 00 00 00 00 00 00 00 00 00 -- 0249F0
00 00 00 00 00 00 00 00 00 00 00 00 00 00 01 FE -- 024A00
00 00 00 00 00 00 00 00 00 00 00 00 00 00 00 00 -- 024A10
00 00 00 00 00 00 00 00 00 00 00 00 00 00 00 00 -- 024A20
```

```
00 00 00 00 00 00 00 00 00 00 00 00 00 00 00 00 -- 024A30
00 00 00 00 00 00 00 00 00 00 00 00 00 00 00 00 -- 024A40
00 00 00 00 00 00 00 00 00 00 00 00 00 00 00 00 -- 024A50
00 00 00 00 00 00 00 00 00 00 00 00 00 00 00 00 -- 024A60
00 00 00 00 00 00 00 00 00 00 00 00 00 00 00 00 -- 024A70
00 00 00 00 00 00 00 00 00 00 00 00 00 00 00 00 -- 024A80
00 00 00 00 00 00 00 00 00 00 00 00 00 00 00 00 -- 024A90
00 00 00 00 00 00 00 00 00 00 00 00 00 00 00 00 -- 024AA0
00 00 00 00 00 00 00 00 00 00 00 00 00 00 00 00 -- 024AB0
00 00 00 00 00 00 00 00 00 00 00 00 00 00 00 00 -- 024AC0
00 00 00 00 00 00 00 00 00 00 00 00 00 00 00 00 -- 024AD0
00 00 00 00 00 00 00 00 00 00 00 00 00 00 00 00 -- 024AE0
00 00 00 00 00 00 00 00 00 00 00 00 00 00 00 00 -- 024AF0
00 00 00 00 00 00 00 00 00 00 00 00 00 00 00 00 -- 024B00
25 00 54 53 41 4C 00 00 00 00 00 00 00 00 00 00 -- 024B10
00 20 64 33 25 20 64 33 25 20 64 33 25 20 64 33 -- 024B20
42 A0 00 00 43 48 00 00 43 48 00 00 00 20 20 20 -- 024B30

43 A5 00 00 43 AA 00 00 42 A0 00 00 43 AA 00 00 -- 024B40
3D CC CC CC 44 13 80 00 44 13 80 00 43 A5 00 00 -- 024B50
00 01 00 00 00 01 00 0C 00 08 00 04 00 02 00 01 -- 024B60
40 00 00 00 C0 A0 00 00 C0 00 00 00 01 00 00 02 -- 024B70
3C 23 D7 0A BD 4C CC CC BC 23 D7 0A 40 A0 00 00 -- 024B80
00 00 00 00 00 01 00 02 00 00 00 00 3D 4C CC CC -- 024B90
00 00 00 00 00 00 00 00 00 00 00 00 00 00 00 00 -- 024BA0
00 00 00 00 00 00 00 00 00 00 00 00 00 00 00 00 -- 024BB0
00 00 00 00 00 00 00 00 00 00 00 00 00 00 00 00 -- 024BC0
00 00 00 00 00 00 00 00 00 00 00 00 00 00 00 00 -- 024BD0
00 00 00 00 00 00 00 00 00 00 00 00 00 00 00 00 -- 024BE0
00 00 00 00 00 00 00 00 00 00 00 00 00 00 00 00 -- 024BF0
00 00 00 00 00 00 00 00 00 00 00 00 00 00 01 FE -- 024C00
00 00 00 00 00 00 00 00 00 00 00 00 00 00 00 00 -- 024C10
00 00 00 00 00 00 00 00 00 00 00 00 00 00 00 00 -- 024C20
00 00 00 00 00 00 00 00 00 00 00 00 00 00 00 00 -- 024C30
00 00 00 00 00 00 00 00 00 00 00 00 00 00 00 00 -- 024C40
00 00 00 00 00 00 00 00 00 00 00 00 00 00 00 00 -- 024C50
00 00 00 00 00 00 00 00 00 00 00 00 00 00 00 00 -- 024C60
00 00 00 00 00 00 00 00 00 00 00 00 00 00 00 00 -- 024C70
00 00 00 00 00 00 00 00 00 00 00 00 00 00 00 00 -- 024C80
00 00 00 00 00 00 00 00 00 00 00 00 00 00 00 00 -- 024C90
00 00 00 00 00 00 00 00 00 00 00 00 00 00 00 00 -- 024CA0
00 00 00 00 00 00 00 00 00 00 00 00 00 00 00 00 -- 024CB0
00 00 00 00 00 00 00 00 00 00 00 00 00 00 00 00 -- 024CC0
00 00 00 00 00 00 00 00 00 00 00 00 00 00 00 00 -- 024CD0
00 00 00 00 00 00 00 00 00 00 00 00 00 00 00 00 -- 024CE0
00 00 00 00 00 00 00 00 00 00 00 00 00 00 00 00 -- 024CF0
00 00 00 00 00 00 00 00 00 00 00 00 00 00 00 00 -- 024D00
00 00 00 00 00 00 00 00 00 00 00 00 00 00 00 00 -- 024D10
00 00 00 00 00 00 00 00 00 00 00 00 00 00 00 00 -- 024D20
00 00 00 00 00 00 00 00 00 00 00 00 00 00 00 00 -- 024D30
00 00 00 00 00 00 00 00 00 00 00 00 00 00 00 00 -- 024D40
00 00 00 00 00 00 00 00 00 00 00 00 00 00 00 00 -- 024D50
00 00 00 00 00 00 00 00 00 00 00 00 00 00 00 00 -- 024D60
00 00 00 00 00 00 00 00 00 00 00 00 00 00 00 00 -- 024D70
00 00 00 00 00 00 00 00 00 00 00 00 00 00 00 00 -- 024D80
00 00 00 00 00 00 00 00 00 00 00 00 00 00 00 00 -- 024D90
00 00 00 00 00 00 00 00 00 00 00 00 00 00 00 00 -- 024DA0
00 00 00 00 00 00 00 00 00 00 00 00 00 00 00 00 -- 024DB0
00 00 00 00 00 00 00 00 00 00 00 00 00 00 00 00 -- 024DC0
00 00 00 00 00 00 00 00 00 00 00 00 00 00 00 00 -- 024DD0
```

```
00 00 00 00 00 00 00 00 00 00 00 00 00 00 00 00 -- 024DE0
00 00 00 00 00 00 00 00 00 00 00 00 00 00 00 00 -- 024DF0
00 00 00 00 00 00 00 00 00 00 00 00 00 00 01 FE -- 024E00
00 00 00 00 00 00 00 00 00 00 00 00 00 00 00 00 -- 024E10
00 00 00 00 00 00 00 00 00 00 00 00 00 00 00 00 -- 024E20
00 00 00 00 00 00 00 00 00 00 00 00 00 00 00 00 -- 024E30
00 00 00 00 00 00 00 00 00 00 00 00 00 00 00 00 -- 024E40
00 00 00 00 00 00 00 00 00 00 00 00 00 00 00 00 -- 024E50
00 00 00 00 00 00 00 00 00 00 00 00 00 00 00 00 -- 024E60
00 00 00 00 00 00 00 00 00 00 00 00 00 00 00 00 -- 024E70
00 00 00 00 00 00 00 00 00 00 00 00 00 00 00 00 -- 024E80
00 00 00 00 00 00 00 00 00 00 00 00 00 00 00 00 -- 024E90
00 00 00 00 00 00 00 00 00 00 00 00 00 00 00 00 -- 024EA0
00 00 00 00 00 00 00 00 00 00 00 00 00 00 00 00 -- 024EB0
00 00 00 00 00 00 00 00 00 00 00 00 00 00 00 00 -- 024EC0
00 00 00 00 00 00 00 00 00 00 00 00 00 00 00 00 -- 024ED0

00 00 00 00 00 00 00 00 00 00 00 00 00 00 00 00 -- 024EE0
00 00 00 00 00 00 00 00 00 00 00 00 00 00 00 00 -- 024EF0
00 00 00 00 00 00 00 00 00 00 00 00 00 00 00 00 -- 024F00
00 00 00 00 00 00 00 00 00 00 00 00 00 00 00 00 -- 024F10
00 00 00 00 00 00 00 00 00 00 00 00 00 00 00 00 -- 024F20
00 00 00 00 00 00 00 00 00 00 00 00 00 00 00 00 -- 024F30
00 00 00 00 00 00 00 00 00 00 00 00 00 00 00 00 -- 024F40
00 00 00 00 00 00 00 00 00 00 00 00 00 00 00 00 -- 024F50
00 00 00 00 00 00 00 00 00 00 00 00 00 00 00 00 -- 024F60
00 00 00 00 00 00 00 00 00 00 00 00 00 00 00 00 -- 024F70
00 00 00 00 00 00 00 00 00 00 00 00 00 00 00 00 -- 024F80
00 00 00 00 00 00 00 00 00 00 00 00 00 00 00 00 -- 024F90
00 00 00 00 00 00 00 00 00 00 00 00 00 00 00 00 -- 024FA0
00 00 00 00 00 00 00 00 00 00 00 00 00 00 00 00 -- 024FB0
00 00 00 00 00 00 00 00 00 00 00 00 00 00 00 00 -- 024FC0
00 00 00 00 00 00 00 00 00 00 00 00 00 00 00 00 -- 024FD0
00 00 00 00 00 00 00 00 00 00 00 00 00 00 00 00 -- 024FE0
00 00 00 00 00 00 00 00 00 00 00 00 00 00 00 00 -- 024FF0
00 00 00 00 00 00 00 00 00 00 00 00 00 00 01 FE -- 025000
00 00 00 00 00 00 00 00 00 00 00 00 00 00 00 00 -- 025010
00 00 00 00 00 00 00 00 00 00 00 00 00 00 00 00 -- 025020
00 00 00 00 00 00 00 00 00 00 00 00 00 00 00 00 -- 025030
00 00 00 00 00 00 00 00 00 00 00 00 00 00 00 00 -- 025040
00 00 00 00 00 00 00 00 00 00 00 00 00 00 00 00 -- 025050
00 00 00 00 00 00 00 00 00 00 00 00 00 00 00 00 -- 025060
00 00 00 00 00 00 00 00 00 00 00 00 00 00 00 00 -- 025070
00 00 00 00 00 00 00 00 00 00 00 00 00 00 00 00 -- 025080
00 00 00 00 00 00 00 00 00 00 00 00 00 00 00 00 -- 025090
00 00 00 00 00 00 00 00 00 00 00 00 00 00 00 00 -- 0250A0
00 00 00 00 00 00 00 00 00 00 00 00 00 00 00 00 -- 0250B0
00 00 00 00 00 00 00 00 00 00 00 00 00 00 00 00 -- 0250C0
00 00 00 00 00 00 00 00 00 00 00 00 00 00 00 00 -- 0250D0
00 00 00 00 00 00 00 00 00 00 00 00 00 00 00 00 -- 0250E0
00 00 00 00 00 00 00 00 00 00 00 00 00 00 00 00 -- 0250F0
00 00 00 00 00 00 00 00 00 00 00 00 00 00 00 00 -- 025100
00 00 00 00 00 00 00 00 00 00 00 00 00 00 00 00 -- 025110
00 00 00 00 00 00 00 00 00 00 00 00 00 00 00 00 -- 025120
00 00 00 00 00 00 00 00 00 00 00 00 00 00 00 00 -- 025130
00 00 00 00 00 00 00 00 00 00 00 00 00 00 00 00 -- 025140
00 00 00 00 00 00 00 00 00 00 00 00 00 00 00 00 -- 025150
00 00 00 00 00 00 00 00 00 00 00 00 00 00 00 00 -- 025160
00 00 00 00 00 00 00 00 00 00 00 00 00 00 00 00 -- 025170
00 00 00 00 00 00 00 00 00 00 00 00 00 00 00 00 -- 025180
```

```
00 00 00 00 00 00 00 00 00 00 00 00 00 00 00 00 -- 025190
00 00 00 00 00 00 00 00 00 00 00 00 00 00 00 00 -- 0251A0
00 00 00 00 00 00 00 00 00 00 00 00 00 00 00 00 -- 0251B0
00 00 00 00 00 00 00 00 00 00 00 00 00 00 00 00 -- 0251C0
00 00 00 00 00 00 00 00 00 00 00 00 00 00 00 00 -- 0251D0
00 00 00 00 00 00 00 00 00 00 00 00 00 00 00 00 -- 0251E0
00 00 00 00 00 00 00 00 00 00 00 00 00 00 00 00 -- 0251F0
00 00 00 00 00 00 00 00 00 00 00 00 00 00 01 FE -- 025200
00 00 00 00 00 00 00 00 00 00 00 00 00 00 00 00 -- 025210
00 00 00 00 00 00 00 00 00 00 00 00 00 00 00 00 -- 025220
00 00 00 00 00 00 00 00 00 00 00 00 00 00 00 00 -- 025230
00 00 00 00 00 00 00 00 00 00 00 00 00 00 00 00 -- 025240
00 00 00 00 00 00 00 00 00 00 00 00 00 00 00 00 -- 025250
00 00 00 00 00 00 00 00 00 00 00 00 00 00 00 00 -- 025260
00 00 00 00 00 00 00 00 00 00 00 00 00 00 00 00 -- 025270

00 00 00 00 00 00 00 00 00 00 00 00 00 00 00 00 -- 025280
00 00 00 00 00 00 00 00 00 00 00 00 00 00 00 00 -- 025290
00 00 00 00 00 00 00 00 00 00 00 00 00 00 00 00 -- 0252A0
00 00 00 00 00 00 00 00 00 00 00 00 00 00 00 00 -- 0252B0
00 00 00 00 00 00 00 00 00 00 00 00 00 00 00 00 -- 0252C0
00 00 00 00 00 00 00 00 00 00 00 00 00 00 00 00 -- 0252D0
00 00 00 00 00 00 00 00 00 00 00 00 00 00 00 00 -- 0252E0
00 00 00 00 00 00 00 00 00 00 00 00 00 00 00 00 -- 0252F0
00 00 00 00 00 00 00 00 00 00 00 00 00 00 00 00 -- 025300
00 00 00 00 00 00 00 00 00 00 00 00 00 00 00 00 -- 025310
00 00 00 00 00 00 00 00 00 00 00 00 00 00 00 00 -- 025320
00 00 00 00 00 00 00 00 00 00 00 00 00 00 00 00 -- 025330
00 00 00 00 00 00 00 00 00 00 00 00 00 00 00 00 -- 025340
00 00 00 00 00 00 00 00 00 00 00 00 00 00 00 00 -- 025350
00 00 00 00 00 00 00 00 00 00 00 00 00 00 00 00 -- 025360
00 00 00 00 00 00 00 00 00 00 00 00 00 00 00 00 -- 025370
00 00 00 00 00 00 00 00 00 00 00 00 00 00 00 00 -- 025380
00 00 00 00 00 00 00 00 00 00 00 00 00 00 00 00 -- 025390
00 00 00 00 00 00 00 00 00 00 00 00 00 00 00 00 -- 0253A0
00 00 00 00 00 00 00 00 00 00 00 00 00 00 00 00 -- 0253B0
00 00 00 00 00 00 00 00 00 00 00 00 00 00 00 00 -- 0253C0
00 00 00 00 00 00 00 00 00 00 00 00 00 00 00 00 -- 0253D0
00 00 00 00 00 00 00 00 00 00 00 00 00 00 00 00 -- 0253E0
00 00 00 00 00 00 00 00 00 00 00 00 00 00 00 00 -- 0253F0
00 00 00 00 00 00 00 00 00 00 00 00 00 00 01 FE -- 025400
00 00 00 00 00 00 00 00 00 00 00 00 00 00 00 00 -- 025410
00 00 00 00 00 00 00 00 00 00 00 00 00 00 00 00 -- 025420
00 00 00 00 00 00 00 00 00 00 00 00 00 00 00 00 -- 025430
00 00 00 00 00 00 00 00 00 00 00 00 00 00 00 00 -- 025440
00 00 00 00 00 00 00 00 00 00 00 00 00 00 00 00 -- 025450
00 00 00 00 00 00 00 00 00 00 00 00 00 00 00 00 -- 025460
00 00 00 00 00 00 00 00 00 00 00 00 00 00 00 00 -- 025470
00 00 00 00 00 00 00 00 00 00 00 00 00 00 00 00 -- 025480
00 00 00 00 00 00 00 00 00 00 00 00 00 00 00 00 -- 025490
00 00 00 00 00 00 00 00 00 00 00 00 00 00 00 00 -- 0254A0
00 00 00 00 00 00 00 00 00 00 00 00 00 00 00 00 -- 0254B0
00 00 00 00 00 00 00 00 00 00 00 00 00 00 00 00 -- 0254C0
00 00 00 00 00 00 00 00 00 00 00 00 00 00 00 00 -- 0254D0
00 00 00 00 00 00 00 00 00 00 00 00 00 00 00 00 -- 0254E0
00 00 00 00 00 00 00 00 00 00 00 00 00 00 00 00 -- 0254F0
00 00 00 00 00 00 00 00 00 00 00 00 00 00 00 00 -- 025500
00 00 00 00 00 00 00 00 00 00 00 00 00 00 00 00 -- 025510
00 00 00 00 00 00 00 00 00 00 00 00 00 00 00 00 -- 025520
00 00 00 00 00 00 00 00 00 00 00 00 00 00 00 00 -- 025530
```

```
00 00 00 00 00 00 00 00 00 00 00 00 00 00 00 00 -- 025540
00 00 00 00 00 00 00 00 00 00 00 00 00 00 00 00 -- 025550
00 00 00 00 00 00 00 00 00 00 00 00 00 00 00 00 -- 025560
00 00 00 00 00 00 00 00 00 00 00 00 00 00 00 00 -- 025570
00 00 00 00 00 00 00 00 00 00 00 00 00 00 00 00 -- 025580
00 00 00 00 00 00 00 00 00 00 00 00 00 00 00 00 -- 025590
00 00 00 00 00 00 00 00 00 00 00 00 00 00 00 00 -- 0255A0
00 00 00 00 00 00 00 00 00 00 00 00 00 00 00 00 -- 0255B0
00 00 00 00 00 00 00 00 00 00 00 00 00 00 00 00 -- 0255C0
00 00 00 00 00 00 00 00 00 00 00 00 00 00 00 00 -- 0255D0
00 00 00 00 00 00 00 00 00 00 00 00 00 00 00 00 -- 0255E0
00 00 00 00 00 00 00 00 00 00 00 00 00 00 00 00 -- 0255F0
00 00 00 00 00 00 00 00 00 00 00 00 00 00 01 FE -- 025600
00 00 00 00 00 00 00 00 00 00 00 00 00 00 00 00 -- 025610

00 00 00 00 00 00 00 00 00 00 00 00 00 00 00 00 -- 025620
00 00 00 00 00 00 00 00 00 00 00 00 00 00 00 00 -- 025630
00 00 00 00 00 00 00 00 00 00 00 00 00 00 00 00 -- 025640
00 00 00 00 00 00 00 00 00 00 00 00 00 00 00 00 -- 025650
00 00 00 00 00 00 00 00 00 00 00 00 00 00 00 00 -- 025660
00 00 00 00 00 00 00 00 00 00 00 00 00 00 00 00 -- 025670
00 00 00 00 00 00 00 00 00 00 00 00 00 00 00 00 -- 025680
00 00 00 00 00 00 00 00 00 00 00 00 00 00 00 00 -- 025690
00 00 00 00 00 00 00 00 00 00 00 00 00 00 00 00 -- 0256A0
00 00 00 00 00 00 00 00 00 00 00 00 00 00 00 00 -- 0256B0
00 00 00 00 00 00 00 00 00 00 00 00 00 00 00 00 -- 0256C0
00 00 00 00 00 00 00 00 00 00 00 00 00 00 00 00 -- 0256D0
00 00 00 00 00 00 00 00 00 00 00 00 00 00 00 00 -- 0256E0
00 00 00 00 00 00 00 00 00 00 00 00 00 00 00 00 -- 0256F0
00 00 00 00 00 00 00 00 00 00 00 00 00 00 00 00 -- 025700
00 00 00 00 00 00 00 00 00 00 00 00 00 00 00 00 -- 025710
00 00 00 00 00 00 00 00 00 00 00 00 00 00 00 00 -- 025720
00 00 00 00 00 00 00 00 00 00 00 00 00 00 00 00 -- 025730
00 00 00 00 00 00 00 00 00 00 00 00 00 00 00 00 -- 025740
00 00 00 00 00 00 00 00 00 00 00 00 00 00 00 00 -- 025750
00 00 00 00 00 00 00 00 00 00 00 00 00 00 00 00 -- 025760
00 00 00 00 00 00 00 00 00 00 00 00 00 00 00 00 -- 025770
00 00 00 00 00 00 00 00 00 00 00 00 00 00 00 00 -- 025780
00 00 00 00 00 00 00 00 00 00 00 00 00 00 00 00 -- 025790
00 00 00 00 00 00 00 00 00 00 00 00 00 00 00 00 -- 0257A0
00 00 00 00 00 00 00 00 00 00 00 00 00 00 00 00 -- 0257B0
00 00 00 00 00 00 00 00 00 00 00 00 00 00 00 00 -- 0257C0
00 00 00 00 00 00 00 00 00 00 00 00 00 00 00 00 -- 0257D0
00 00 00 00 00 00 00 00 00 00 00 00 00 00 00 00 -- 0257E0
00 00 00 00 00 00 00 00 00 00 00 00 00 00 00 00 -- 0257F0
00 00 00 00 00 00 00 00 00 00 00 00 00 00 01 FE -- 025800
00 00 00 00 00 00 00 00 00 00 00 00 00 00 00 00 -- 025810
00 00 00 00 00 00 00 00 00 00 00 00 00 00 00 00 -- 025820
00 00 00 00 00 00 00 00 00 00 00 00 00 00 00 00 -- 025830
00 00 00 00 00 00 00 00 00 00 00 00 00 00 00 00 -- 025840
00 00 00 00 00 00 00 00 00 00 00 00 00 00 00 00 -- 025850
00 00 00 00 00 00 00 00 00 00 00 00 00 00 00 00 -- 025860
00 00 00 00 00 00 00 00 00 00 00 00 00 00 00 00 -- 025870
00 00 00 00 00 00 00 00 00 00 00 00 00 00 00 00 -- 025880
00 00 00 00 00 00 00 00 00 00 00 00 00 00 00 00 -- 025890
00 00 00 00 00 00 00 00 00 00 00 00 00 00 00 00 -- 0258A0
00 00 00 00 00 00 00 00 00 00 00 00 00 00 00 00 -- 0258B0
00 00 00 00 00 00 00 00 00 00 00 00 00 00 00 00 -- 0258C0
00 00 00 00 00 00 00 00 00 00 00 00 00 00 00 00 -- 0258D0
00 00 00 00 00 00 00 00 00 00 00 00 00 00 00 00 -- 0258E0
```

```
00 00 00 00 00 00 00 00 00 00 00 00 00 00 00 00 -- 0258F0
00 00 00 00 00 00 00 00 00 00 00 00 00 00 00 00 -- 025900
00 00 00 00 00 00 00 00 00 00 00 00 00 00 00 00 -- 025910
00 00 00 00 00 00 00 00 00 00 00 00 00 00 00 00 -- 025920
00 00 00 00 00 00 00 00 00 00 00 00 00 00 00 00 -- 025930
00 00 00 00 00 00 00 00 00 00 00 00 00 00 00 00 -- 025940
00 00 00 00 00 00 00 00 00 00 00 00 00 00 00 00 -- 025950
00 00 00 00 00 00 00 00 00 00 00 00 00 00 00 00 -- 025960
00 00 00 00 00 00 00 00 00 00 00 00 00 00 00 00 -- 025970
00 00 00 00 00 00 00 00 00 00 00 00 00 00 00 00 -- 025980
00 00 00 00 00 00 00 00 00 00 00 00 00 00 00 00 -- 025990
00 00 00 00 00 00 00 00 00 00 00 00 00 00 00 00 -- 0259A0
00 00 00 00 00 00 00 00 00 00 00 00 00 00 00 00 -- 0259B0

00 00 00 00 00 00 00 00 00 00 00 00 00 00 00 00 -- 0259C0
00 00 00 00 00 00 00 00 00 00 00 00 00 00 00 00 -- 0259D0
00 00 00 00 00 00 00 00 00 00 00 00 00 00 00 00 -- 0259E0
00 00 00 00 00 00 00 00 00 00 00 00 00 00 00 00 -- 0259F0
00 00 00 00 00 00 00 00 00 00 00 00 00 00 01 FE -- 025A00
00 00 00 00 00 00 00 00 00 00 00 00 00 00 00 00 -- 025A10
00 00 00 00 00 00 00 00 00 00 00 00 00 00 00 00 -- 025A20
00 00 00 00 00 00 00 00 00 00 00 00 00 00 00 00 -- 025A30
00 00 00 00 00 00 00 00 00 00 00 00 00 00 00 00 -- 025A40
00 00 00 00 00 00 00 00 00 00 00 00 00 00 00 00 -- 025A50
00 00 00 00 00 00 00 00 00 00 00 00 00 00 00 00 -- 025A60
00 00 00 00 00 00 00 00 00 00 00 00 00 00 00 00 -- 025A70
00 00 00 00 00 00 00 00 00 00 00 00 00 00 00 00 -- 025A80
00 00 00 00 00 00 00 00 00 00 00 00 00 00 00 00 -- 025A90
00 00 00 00 00 00 00 00 00 00 00 00 00 00 00 00 -- 025AA0
00 00 00 00 00 00 00 00 00 00 00 00 00 00 00 00 -- 025AB0
00 00 00 00 00 00 00 00 00 00 00 00 00 00 00 00 -- 025AC0
00 00 00 00 00 00 00 00 00 00 00 00 00 00 00 00 -- 025AD0
00 00 00 00 00 00 00 00 00 00 00 00 00 00 00 00 -- 025AE0
00 00 00 00 00 00 00 00 00 00 00 00 00 00 00 00 -- 025AF0
00 00 00 00 00 00 00 00 00 00 00 00 00 00 00 00 -- 025B00
00 00 00 00 00 00 00 00 00 00 00 00 00 00 00 00 -- 025B10
00 00 00 00 00 00 00 00 00 00 00 00 00 00 00 00 -- 025B20
00 00 00 00 00 00 00 00 00 00 00 00 00 00 00 00 -- 025B30
00 00 00 00 00 00 00 00 00 00 00 00 00 00 00 00 -- 025B40
00 00 00 00 00 00 00 00 00 00 00 00 00 00 00 00 -- 025B50
00 00 00 00 00 00 00 00 00 00 00 00 00 00 00 00 -- 025B60
00 00 00 00 00 00 00 00 00 00 00 00 00 00 00 00 -- 025B70
00 00 00 00 00 00 00 00 00 00 00 00 00 00 00 00 -- 025B80
00 00 00 00 00 00 00 00 00 00 00 00 00 00 00 00 -- 025B90
00 00 00 00 00 00 00 00 00 00 00 00 00 00 00 00 -- 025BA0
00 00 00 00 00 00 00 00 00 00 00 00 00 00 00 00 -- 025BB0
00 00 00 00 00 00 00 00 00 00 00 00 00 00 00 00 -- 025BC0
00 00 00 00 00 00 00 00 00 00 00 00 00 00 00 00 -- 025BD0
00 00 00 00 00 00 00 00 00 00 00 00 00 00 00 00 -- 025BE0
00 00 00 00 00 00 00 00 00 00 00 00 00 00 00 00 -- 025BF0
00 00 00 00 00 00 00 00 00 00 00 00 00 00 01 FE -- 025C00
00 00 00 00 00 00 00 00 00 00 00 00 00 00 00 00 -- 025C10
00 00 00 00 00 00 00 00 00 00 00 00 00 00 00 00 -- 025C20
00 00 00 00 00 00 00 00 00 00 00 00 00 00 00 00 -- 025C30
00 00 00 00 00 00 00 00 00 00 00 00 00 00 00 00 -- 025C40
00 00 00 00 00 00 00 00 00 00 00 00 00 00 00 00 -- 025C50
00 00 00 00 00 00 00 00 00 00 00 00 00 00 00 00 -- 025C60
00 00 00 00 00 00 00 00 00 00 00 00 00 00 00 00 -- 025C70
00 00 00 00 00 00 00 00 00 00 00 00 00 00 00 00 -- 025C80
00 00 00 00 00 00 00 00 00 00 00 00 00 00 00 00 -- 025C90
```

```
00  00  00  00  00  00  00  00  00  00  00  00  00  00  00  00  --  025CA0
00  00  00  00  00  00  00  00  00  00  00  00  00  00  00  00  --  025CB0
00  00  00  00  00  00  00  00  00  00  00  00  00  00  00  00  --  025CC0
00  00  00  00  00  00  00  00  00  00  00  00  00  00  00  00  --  025CD0
00  00  00  00  00  00  00  00  00  00  00  00  00  00  00  00  --  025CE0
00  00  00  00  00  00  00  00  00  00  00  00  00  00  00  00  --  025CF0
00  00  00  00  00  00  00  00  00  00  00  00  00  00  00  00  --  025D00
00  00  00  00  00  00  00  00  00  00  00  00  00  00  00  00  --  025D10
00  00  00  00  00  00  00  00  00  00  00  00  00  00  00  00  --  025D20
00  00  00  00  00  00  00  00  00  00  00  00  00  00  00  00  --  025D30
00  00  00  00  00  00  00  00  00  00  00  00  00  00  00  00  --  025D40
00  00  00  00  00  00  00  00  00  00  00  00  00  00  00  00  --  025D50

00  00  00  00  00  00  00  00  00  00  00  00  00  00  00  00  --  025D60
00  00  00  00  00  00  00  00  00  00  00  00  00  00  00  00  --  025D70
00  00  00  00  00  00  00  00  00  00  00  00  00  00  00  00  --  025D80
00  00  00  00  00  00  00  00  00  00  00  00  00  00  00  00  --  025D90
00  00  00  00  00  00  00  00  00  00  00  00  00  00  00  00  --  025DA0
00  00  00  00  00  00  00  00  00  00  00  00  00  00  00  00  --  025DB0
00  00  00  00  00  00  00  00  00  00  00  00  00  00  00  00  --  025DC0
00  00  00  00  00  00  00  00  00  00  00  00  00  00  00  00  --  025DD0
00  00  00  00  00  00  00  00  00  00  00  00  00  00  00  00  --  025DE0
00  00  00  00  00  00  00  00  00  00  00  00  00  00  00  00  --  025DF0
00  00  00  00  00  00  00  00  00  00  00  00  00  00  01  FE  --  025E00
00  00  00  00  00  00  00  00  00  00  00  00  00  00  00  00  --  025E10
00  00  00  00  00  00  00  00  00  00  00  00  00  00  00  00  --  025E20
00  00  00  00  00  00  00  00  00  00  00  00  00  00  00  00  --  025E30
00  00  00  00  00  00  00  00  00  00  00  00  00  00  00  00  --  025E40
00  00  00  00  00  00  00  00  00  00  00  00  00  00  00  00  --  025E50
00  00  00  00  00  00  00  00  00  00  00  00  00  00  00  00  --  025E60
00  00  00  00  00  00  00  00  00  00  00  00  00  00  00  00  --  025E70
00  00  00  00  00  00  00  00  00  00  00  00  00  00  00  00  --  025E80
00  00  00  00  00  00  00  00  00  00  00  00  00  00  00  00  --  025E90
00  00  00  00  00  00  00  00  00  00  00  00  00  00  00  00  --  025EA0
00  00  00  00  00  00  00  00  00  00  00  00  00  00  00  00  --  025EB0
00  00  00  00  00  00  00  00  00  00  00  00  00  00  00  00  --  025EC0
00  00  00  00  00  00  00  00  00  00  00  00  00  00  00  00  --  025ED0
00  00  00  00  00  00  00  00  00  00  00  00  00  00  00  00  --  025EE0
00  00  00  00  00  00  00  00  00  00  00  00  00  00  00  00  --  025EF0
00  00  00  00  00  00  00  00  00  00  00  00  00  00  00  00  --  025F00
00  00  00  00  00  00  00  00  00  00  00  00  00  00  00  00  --  025F10
00  00  00  00  00  00  00  00  00  00  00  00  00  00  00  00  --  025F20
00  00  00  00  00  00  00  00  00  00  00  00  00  00  00  00  --  025F30
00  00  00  00  00  00  00  00  00  00  00  00  00  00  00  00  --  025F40
00  00  00  00  00  00  00  00  00  00  00  00  00  00  00  00  --  025F50
00  00  00  00  00  00  00  00  00  00  00  00  00  00  00  00  --  025F60
00  00  00  00  00  00  00  00  00  00  00  00  00  00  00  00  --  025F70
00  00  00  00  00  00  00  00  00  00  00  00  00  00  00  00  --  025F80
00  00  00  00  00  00  00  00  00  00  00  00  00  00  00  00  --  025F90
00  00  00  00  00  00  00  00  00  00  00  00  00  00  00  00  --  025FA0
00  00  00  00  00  00  00  00  00  00  00  00  00  00  00  00  --  025FB0
00  00  00  00  00  00  00  00  00  00  00  00  00  00  00  00  --  025FC0
00  00  00  00  00  00  00  00  00  00  00  00  00  00  00  00  --  025FD0
00  00  00  00  00  00  00  00  00  00  00  00  00  00  00  00  --  025FE0
00  00  00  00  00  00  00  00  00  00  00  00  00  00  00  00  --  025FF0
00  00  00  00  00  00  00  00  00  00  00  00  00  00  01  FE  --  026000
00  00  00  00  00  00  00  00  00  00  00  00  00  00  00  00  --  026010
00  00  00  00  00  00  00  00  00  00  00  00  00  00  00  00  --  026020
00  00  00  00  00  00  00  00  00  00  00  00  00  00  00  00  --  026030
00  00  00  00  00  00  00  00  00  00  00  00  00  00  00  00  --  026040
```

```
00 00 00 00 00 00 00 00 00 00 00 00 00 00 00 00 -- 026050
00 00 00 00 00 00 00 00 00 00 00 00 00 00 00 00 -- 026060
00 00 00 00 00 00 00 00 00 00 00 00 00 00 00 00 -- 026070
00 00 00 00 00 00 00 00 00 00 00 00 00 00 00 00 -- 026080
00 00 00 00 00 00 00 00 00 00 00 00 00 00 00 00 -- 026090
00 00 00 00 00 00 00 00 00 00 00 00 00 00 00 00 -- 0260A0
00 00 00 00 00 00 00 00 00 00 00 00 00 00 00 00 -- 0260B0
00 00 00 00 00 00 00 00 00 00 00 00 00 00 00 00 -- 0260C0
00 00 00 00 00 00 00 00 00 00 00 00 00 00 00 00 -- 0260D0
00 00 00 00 00 00 00 00 00 00 00 00 00 00 00 00 -- 0260E0
00 00 00 00 00 00 00 00 00 00 00 00 00 00 00 00 -- 0260F0

00 00 00 00 00 00 00 00 00 00 00 00 00 00 00 00 -- 026100
00 00 00 00 00 00 00 00 00 00 00 00 00 00 00 00 -- 026110
00 00 00 00 00 00 00 00 00 00 00 00 00 00 00 00 -- 026120
00 00 00 00 00 00 00 00 00 00 00 00 00 00 00 00 -- 026130
00 00 00 00 00 00 00 00 00 00 00 00 00 00 00 00 -- 026140
00 00 00 00 00 00 00 00 00 00 00 00 00 00 00 00 -- 026150
00 00 00 00 00 00 00 00 00 00 00 00 00 00 00 00 -- 026160
00 00 00 00 00 00 00 00 00 00 00 00 00 00 00 00 -- 026170
00 00 00 00 00 00 00 00 00 00 00 00 00 00 00 00 -- 026180
00 00 00 00 00 00 00 00 00 00 00 00 00 00 00 00 -- 026190
00 00 00 00 00 00 00 00 00 00 00 00 00 00 00 00 -- 0261A0
00 00 00 00 00 00 00 00 00 00 00 00 00 00 00 00 -- 0261B0
00 00 00 00 00 00 00 00 00 00 00 00 00 00 00 00 -- 0261C0
00 00 00 00 00 00 00 00 00 00 00 00 00 00 00 00 -- 0261D0
00 00 00 00 00 00 00 00 00 00 00 00 00 00 00 00 -- 0261E0
00 00 00 00 00 00 00 00 00 00 00 00 00 00 00 00 -- 0261F0
00 00 00 00 00 00 00 00 00 00 00 00 00 00 01 FE -- 026200
00 00 00 00 00 00 00 00 00 00 00 00 00 00 00 00 -- 026210
00 00 00 00 00 00 00 00 00 00 00 00 00 00 00 00 -- 026220
00 00 00 00 00 00 00 00 00 00 00 00 00 00 00 00 -- 026230
00 00 00 00 00 00 00 00 00 00 00 00 00 00 00 00 -- 026240
00 00 00 00 00 00 00 00 00 00 00 00 00 00 00 00 -- 026250
00 00 00 00 00 00 00 00 00 00 00 00 00 00 00 00 -- 026260
00 00 00 00 00 00 00 00 00 00 00 00 00 00 00 00 -- 026270
00 00 00 00 00 00 00 00 00 00 00 00 00 00 00 00 -- 026280
00 00 00 00 00 00 00 00 00 00 00 00 00 00 00 00 -- 026290
00 00 00 00 00 00 00 00 00 00 00 00 00 00 00 00 -- 0262A0
00 00 00 00 00 00 00 00 00 00 00 00 00 00 00 00 -- 0262B0
00 00 00 00 00 00 00 00 00 00 00 00 00 00 00 00 -- 0262C0
00 00 00 00 00 00 00 00 00 00 00 00 00 00 00 00 -- 0262D0
00 00 00 00 00 00 00 00 00 00 00 00 00 00 00 00 -- 0262E0
00 00 00 00 00 00 00 00 00 00 00 00 00 00 00 00 -- 0262F0
00 00 00 00 00 00 00 00 00 00 00 00 00 00 00 00 -- 026300
00 00 00 00 00 00 00 00 00 00 00 00 00 00 00 00 -- 026310
00 00 00 00 00 00 00 00 00 00 00 00 00 00 00 00 -- 026320
00 00 00 00 00 00 00 00 00 00 00 00 00 00 00 00 -- 026330
00 00 00 00 00 00 00 00 00 00 00 00 00 00 00 00 -- 026340
00 00 00 00 00 00 00 00 00 00 00 00 00 00 00 00 -- 026350
00 00 00 00 00 00 00 00 00 00 00 00 00 00 00 00 -- 026360
00 00 00 00 00 00 00 00 00 00 00 00 00 00 00 00 -- 026370
00 00 00 00 00 00 00 00 00 00 00 00 00 00 00 00 -- 026380
00 00 00 00 00 00 00 00 00 00 00 00 00 00 00 00 -- 026390
00 00 00 00 00 00 00 00 00 00 00 00 00 00 00 00 -- 0263A0
00 00 00 00 00 00 00 00 00 00 00 00 00 00 00 00 -- 0263B0
00 00 00 00 00 00 00 00 00 00 00 00 00 00 00 00 -- 0263C0
00 00 00 00 00 00 00 00 00 00 00 00 00 00 00 00 -- 0263D0
00 00 00 00 00 00 00 00 00 00 00 00 00 00 00 00 -- 0263E0
00 00 00 00 00 00 00 00 00 00 00 00 00 00 00 00 -- 0263F0
```

```
00 00 00 00 00 00 00 00 00 00 00 00 00 00 01 FE -- 026400
00 00 00 00 00 00 00 00 00 00 00 00 00 00 00 00 -- 026410
00 00 00 00 00 00 00 00 00 00 00 00 00 00 00 00 -- 026420
00 00 00 00 00 00 00 00 00 00 00 00 00 00 00 00 -- 026430
00 00 00 00 00 00 00 00 00 00 00 00 00 00 00 00 -- 026440
00 00 00 00 00 00 00 00 00 00 00 00 00 00 00 00 -- 026450
00 00 00 00 00 00 00 00 00 00 00 00 00 00 00 00 -- 026460
00 00 00 00 00 00 00 00 00 00 00 00 00 00 00 00 -- 026470
00 00 00 00 00 00 00 00 00 00 00 00 00 00 00 00 -- 026480
00 00 00 00 00 00 00 00 00 00 00 00 00 00 00 00 -- 026490

00 00 00 00 00 00 00 00 00 00 00 00 00 00 00 00 -- 0264A0
00 00 00 00 00 00 00 00 00 00 00 00 00 00 00 00 -- 0264B0
00 00 00 00 00 00 00 00 00 00 00 00 00 00 00 00 -- 0264C0
00 00 00 00 00 00 00 00 00 00 00 00 00 00 00 00 -- 0264D0
00 00 00 00 00 00 00 00 00 00 00 00 00 00 00 00 -- 0264E0
00 00 00 00 00 00 00 00 00 00 00 00 00 00 00 00 -- 0264F0
00 00 00 00 00 00 00 00 00 00 00 00 00 00 00 00 -- 026500
00 00 00 00 00 00 00 00 00 00 00 00 00 00 00 00 -- 026510
00 00 00 00 00 00 00 00 00 00 00 00 00 00 00 00 -- 026520
00 00 00 00 00 00 00 00 00 00 00 00 00 00 00 00 -- 026530
00 00 00 00 00 00 00 00 00 00 00 00 00 00 00 00 -- 026540
00 00 00 00 00 00 00 00 00 00 00 00 00 00 00 00 -- 026550
00 00 00 00 00 00 00 00 00 00 00 00 00 00 00 00 -- 026560
00 00 00 00 00 00 00 00 00 00 00 00 00 00 00 00 -- 026570
00 00 00 00 00 00 00 00 00 00 00 00 00 00 00 00 -- 026580
00 00 00 00 00 00 00 00 00 00 00 00 00 00 00 00 -- 026590
00 00 00 00 00 00 00 00 00 00 00 00 00 00 00 00 -- 0265A0
00 00 00 00 00 00 00 00 00 00 00 00 00 00 00 00 -- 0265B0
00 00 00 00 00 00 00 00 00 00 00 00 00 00 00 00 -- 0265C0
00 00 00 00 00 00 00 00 00 00 00 00 00 00 00 00 -- 0265D0
00 00 00 00 00 00 00 00 00 00 00 00 00 00 00 00 -- 0265E0
00 00 00 00 00 00 00 00 00 00 00 00 00 00 00 00 -- 0265F0
00 00 00 00 00 00 00 00 00 00 00 00 00 00 01 FE -- 026600
00 00 00 00 00 00 00 00 00 00 00 00 00 00 00 00 -- 026610
00 00 00 00 00 00 00 00 00 00 00 00 00 00 00 00 -- 026620
00 00 00 00 00 00 00 00 00 00 00 00 00 00 00 00 -- 026630
00 00 00 00 00 00 00 00 00 00 00 00 00 00 00 00 -- 026640
00 00 00 00 00 00 00 00 00 00 00 00 00 00 00 00 -- 026650
00 00 00 00 00 00 00 00 00 00 00 00 00 00 00 00 -- 026660
00 00 00 00 00 00 00 00 00 00 00 00 00 00 00 00 -- 026670
00 00 00 00 00 00 00 00 00 00 00 00 00 00 00 00 -- 026680
00 00 00 00 00 00 00 00 00 00 00 00 00 00 00 00 -- 026690
00 00 00 00 00 00 00 00 00 00 00 00 00 00 00 00 -- 0266A0
00 00 00 00 00 00 00 00 00 00 00 00 00 00 00 00 -- 0266B0
00 00 00 00 00 00 00 00 00 00 00 00 00 00 00 00 -- 0266C0
00 00 00 00 00 00 00 00 00 00 00 00 00 00 00 00 -- 0266D0
00 00 00 00 00 00 00 00 00 00 00 00 00 00 00 00 -- 0266E0
00 00 00 00 00 00 00 00 00 00 00 00 00 00 00 00 -- 0266F0
00 00 00 00 00 00 00 00 00 00 00 00 00 00 00 00 -- 026700
00 00 00 00 00 00 00 00 00 00 00 00 00 00 00 00 -- 026710
00 00 00 00 00 00 00 00 00 00 00 00 00 00 00 00 -- 026720
00 00 00 00 00 00 00 00 00 00 00 00 00 00 00 00 -- 026730
00 00 00 00 00 00 00 00 00 00 00 00 00 00 00 00 -- 026740
00 00 00 00 00 00 00 00 00 00 00 00 00 00 00 00 -- 026750
00 00 00 00 00 00 00 00 00 00 00 00 00 00 00 00 -- 026760
00 00 00 00 00 00 00 00 00 00 00 00 00 00 00 00 -- 026770
00 00 00 00 00 00 00 00 00 00 00 00 00 00 00 00 -- 026780
00 00 00 00 00 00 00 00 00 00 00 00 00 00 00 00 -- 026790
00 00 00 00 00 00 00 00 00 00 00 00 00 00 00 00 -- 0267A0
```

177

```
00 00 00 00 00 00 00 00 00 00 00 00 00 00 00 00 -- 0267B0
00 00 00 00 00 00 00 00 00 00 00 00 00 00 00 00 -- 0267C0
00 00 00 00 00 00 00 00 00 00 00 00 00 00 00 00 -- 0267D0
00 00 00 00 00 00 00 00 00 00 00 00 00 00 00 00 -- 0267E0
00 00 00 00 00 00 00 00 00 00 00 00 00 00 00 00 -- 0267F0
00 00 00 00 00 00 00 00 00 00 00 00 00 00 01 FE -- 026800
00 00 00 00 00 00 00 00 00 00 00 00 00 00 00 00 -- 026810
00 00 00 00 00 00 00 00 00 00 00 00 00 00 00 00 -- 026820
00 00 00 00 00 00 00 00 00 00 00 00 00 00 00 00 -- 026830

00 00 00 00 00 00 00 00 00 00 00 00 00 00 00 00 -- 026840
00 00 00 00 00 00 00 00 00 00 00 00 00 00 00 00 -- 026850
00 00 00 00 00 00 00 00 00 00 00 00 00 00 00 00 -- 026860
00 00 00 00 00 00 00 00 00 00 00 00 00 00 00 00 -- 026870
00 00 00 00 00 00 00 00 00 00 00 00 00 00 00 00 -- 026880
00 00 00 00 00 00 00 00 00 00 00 00 00 00 00 00 -- 026890
00 00 00 00 00 00 00 00 00 00 00 00 00 00 00 00 -- 0268A0
00 00 00 00 00 00 00 00 00 00 00 00 00 00 00 00 -- 0268B0
00 00 00 00 00 00 00 00 00 00 00 00 00 00 00 00 -- 0268C0
00 00 00 00 00 00 00 00 00 00 00 00 00 00 00 00 -- 0268D0
00 00 00 00 00 00 00 00 00 00 00 00 00 00 00 00 -- 0268E0
00 00 00 00 00 00 00 00 00 00 00 00 00 00 00 00 -- 0268F0
00 00 00 00 00 00 00 00 00 00 00 00 00 00 00 00 -- 026900
00 00 00 00 00 00 00 00 00 00 00 00 00 00 00 00 -- 026910
00 00 00 00 00 00 00 00 00 00 00 00 00 00 00 00 -- 026920
00 00 00 00 00 00 00 00 00 00 00 00 00 00 00 00 -- 026930
00 00 00 00 00 00 00 00 00 00 00 00 00 00 00 00 -- 026940
00 00 00 00 00 00 00 00 00 00 00 00 00 00 00 00 -- 026950
00 00 00 00 00 00 00 00 00 00 00 00 00 00 00 00 -- 026960
00 00 00 00 00 00 00 00 00 00 00 00 00 00 00 00 -- 026970
00 00 00 00 00 00 00 00 00 00 00 00 00 00 00 00 -- 026980
00 00 00 00 00 00 00 00 00 00 00 00 00 00 00 00 -- 026990
00 00 00 00 00 00 00 00 00 00 00 00 00 00 00 00 -- 0269A0
00 00 00 00 00 00 00 00 00 00 00 00 00 00 00 00 -- 0269B0
00 00 00 00 00 00 00 00 00 00 00 00 00 00 00 00 -- 0269C0
00 00 00 00 00 00 00 00 00 00 00 00 00 00 00 00 -- 0269D0
00 00 00 00 00 00 00 00 00 00 00 00 00 00 00 00 -- 0269E0
00 00 00 00 00 00 00 00 00 00 00 00 00 00 00 00 -- 0269F0
00 00 00 00 00 00 00 00 00 00 00 00 00 00 01 FE -- 026A00
00 00 00 00 00 00 00 00 00 00 00 00 00 00 00 00 -- 026A10
00 00 00 00 00 00 00 00 00 00 00 00 00 00 00 00 -- 026A20
00 00 00 00 00 00 00 00 00 00 00 00 00 00 00 00 -- 026A30
00 00 00 00 00 00 00 00 00 00 00 00 00 00 00 00 -- 026A40
00 00 00 00 00 00 00 00 00 00 00 00 00 00 00 00 -- 026A50
00 00 00 00 00 00 00 00 00 00 00 00 00 00 00 00 -- 026A60
00 00 00 00 00 00 00 00 00 00 00 00 00 00 00 00 -- 026A70
00 00 00 00 00 00 00 00 00 00 00 00 00 00 00 00 -- 026A80
00 00 00 00 00 00 00 00 00 00 00 00 00 00 00 00 -- 026A90
00 00 00 00 00 00 00 00 00 00 00 00 00 00 00 00 -- 026AA0
00 00 00 00 00 00 00 00 00 00 00 00 00 00 00 00 -- 026AB0
00 00 00 00 00 00 00 00 00 00 00 00 00 00 00 00 -- 026AC0
00 00 00 00 00 00 00 00 00 00 00 00 00 00 00 00 -- 026AD0
00 00 00 00 00 00 00 00 00 00 00 00 00 00 00 00 -- 026AE0
00 00 00 00 00 00 00 00 00 00 00 00 00 00 00 00 -- 026AF0
00 00 00 00 00 00 00 00 00 00 00 00 00 00 00 00 -- 026B00
00 00 00 00 00 00 00 00 00 00 00 00 00 00 00 00 -- 026B10
00 00 00 00 00 00 00 00 00 00 00 00 00 00 00 00 -- 026B20
00 00 00 00 00 00 00 00 00 00 00 00 00 00 00 00 -- 026B30
00 00 00 00 00 00 00 00 00 00 00 00 00 00 00 00 -- 026B40
00 00 00 00 00 00 00 00 00 00 00 00 00 00 00 00 -- 026B50
```

```
00 00 00 00 00 00 00 00 00 00 00 00 00 00 00 00 -- 026B60
00 00 00 00 00 00 00 00 00 00 00 00 00 00 00 00 -- 026B70
00 00 00 00 00 00 00 00 00 00 00 00 00 00 00 00 -- 026B80
00 00 00 00 00 00 00 00 00 00 00 00 00 00 00 00 -- 026B90
00 00 00 00 00 00 00 00 00 00 00 00 00 00 00 00 -- 026BA0
00 00 00 00 00 00 00 00 00 00 00 00 00 00 00 00 -- 026BB0
00 00 00 00 00 00 00 00 00 00 00 00 00 00 00 00 -- 026BC0
00 00 00 00 00 00 00 00 00 00 00 00 00 00 00 00 -- 026BD0

00 00 00 00 00 00 00 00 00 00 00 00 00 00 00 00 -- 026BE0
00 00 00 00 00 00 00 00 00 00 00 00 00 00 00 00 -- 026BF0
00 00 00 00 00 00 00 00 00 00 00 00 00 00 01 FE -- 026C00
00 00 00 00 00 00 00 00 00 00 00 00 00 00 00 00 -- 026C10
00 00 00 00 00 00 00 00 00 00 00 00 00 00 00 00 -- 026C20
00 00 00 00 00 00 00 00 00 00 00 00 00 00 00 00 -- 026C30
00 00 00 00 00 00 00 00 00 00 00 00 00 00 00 00 -- 026C40
00 00 00 00 00 00 00 00 00 00 00 00 00 00 00 00 -- 026C50
00 00 00 00 00 00 00 00 00 00 00 00 00 00 00 00 -- 026C60
00 00 00 00 00 00 00 00 00 00 00 00 00 00 00 00 -- 026C70
00 00 00 00 00 00 00 00 00 00 00 00 00 00 00 00 -- 026C80
00 00 00 00 00 00 00 00 00 00 00 00 00 00 00 00 -- 026C90
00 00 00 00 00 00 00 00 00 00 00 00 00 00 00 00 -- 026CA0
00 00 00 00 00 00 00 00 00 00 00 00 00 00 00 00 -- 026CB0
00 00 00 00 00 00 00 00 00 00 00 00 00 00 00 00 -- 026CC0
00 00 00 00 00 00 00 00 00 00 00 00 00 00 00 00 -- 026CD0
00 00 00 00 00 00 00 00 00 00 00 00 00 00 00 00 -- 026CE0
00 00 00 00 00 00 00 00 00 00 00 00 00 00 00 00 -- 026CF0
00 00 00 00 00 00 00 00 00 00 00 00 00 00 00 00 -- 026D00
00 00 00 00 00 00 00 00 00 00 00 00 00 00 00 00 -- 026D10
00 00 00 00 00 00 00 00 00 00 00 00 00 00 00 00 -- 026D20
00 00 00 00 00 00 00 00 00 00 00 00 00 00 00 00 -- 026D30
00 00 00 00 00 00 00 00 00 00 00 00 00 00 00 00 -- 026D40
00 00 00 00 00 00 00 00 00 00 00 00 00 00 00 00 -- 026D50
00 00 00 00 00 00 00 00 00 00 00 00 00 00 00 00 -- 026D60
00 00 00 00 00 00 00 00 00 00 00 00 00 00 00 00 -- 026D70
00 00 00 00 00 00 00 00 00 00 00 00 00 00 00 00 -- 026D80
00 00 00 00 00 00 00 00 00 00 00 00 00 00 00 00 -- 026D90
00 00 00 00 00 00 00 00 00 00 00 00 00 00 00 00 -- 026DA0
00 00 00 00 00 00 00 00 00 00 00 00 00 00 00 00 -- 026DB0
00 00 00 00 00 00 00 00 00 00 00 00 00 00 00 00 -- 026DC0
00 00 00 00 00 00 00 00 00 00 00 00 00 00 00 00 -- 026DD0
00 00 00 00 00 00 00 00 00 00 00 00 00 00 00 00 -- 026DE0
00 00 00 00 00 00 00 00 00 00 00 00 00 00 00 00 -- 026DF0
00 00 00 00 00 00 00 00 00 00 00 00 00 00 01 FE -- 026E00
00 00 00 00 00 00 00 00 00 00 00 00 00 00 00 00 -- 026E10
00 00 00 00 00 00 00 00 00 00 00 00 00 00 00 00 -- 026E20
00 00 00 00 00 00 00 00 00 00 00 00 00 00 00 00 -- 026E30
00 00 00 00 00 00 00 00 00 00 00 00 00 00 00 00 -- 026E40
00 00 00 00 00 00 00 00 00 00 00 00 00 00 00 00 -- 026E50
00 00 00 00 00 00 00 00 00 00 00 00 00 00 00 00 -- 026E60
00 00 00 00 00 00 00 00 00 00 00 00 00 00 00 00 -- 026E70
00 00 00 00 00 00 00 00 00 00 00 00 00 00 00 00 -- 026E80
00 00 00 00 00 00 00 00 00 00 00 00 00 00 00 00 -- 026E90
00 00 00 00 00 00 00 00 00 00 00 00 00 00 00 00 -- 026EA0
00 00 00 00 00 00 00 00 00 00 00 00 00 00 00 00 -- 026EB0
00 00 00 00 00 00 00 00 00 00 00 00 00 00 00 00 -- 026EC0
00 00 00 00 00 00 00 00 00 00 00 00 00 00 00 00 -- 026ED0
00 00 00 00 00 00 00 00 00 00 00 00 00 00 00 00 -- 026EE0
00 00 00 00 00 00 00 00 00 00 00 00 00 00 00 00 -- 026EF0
00 00 00 00 00 00 00 00 00 00 00 00 00 00 00 00 -- 026F00
```

```
00 00 00 00 00 00 00 00 00 00 00 00 00 00 00 00 -- 026F10
00 00 00 00 00 00 00 00 00 00 00 00 00 00 00 00 -- 026F20
00 00 00 00 00 00 00 00 00 00 00 00 00 00 00 00 -- 026F30
00 00 00 00 00 00 00 00 00 00 00 00 00 00 00 00 -- 026F40
00 00 00 00 00 00 00 00 00 00 00 00 00 00 00 00 -- 026F50
00 00 00 00 00 00 00 00 00 00 00 00 00 00 00 00 -- 026F60
00 00 00 00 00 00 00 00 00 00 00 00 00 00 00 00 -- 026F70

00 00 00 00 00 00 00 00 00 00 00 00 00 00 00 00 -- 026F80
00 00 00 00 00 00 00 00 00 00 00 00 00 00 00 00 -- 026F90
00 00 00 00 00 00 00 00 00 00 00 00 00 00 00 00 -- 026FA0
00 00 00 00 00 00 00 00 00 00 00 00 00 00 00 00 -- 026FB0
00 00 00 00 00 00 00 00 00 00 00 00 00 00 00 00 -- 026FC0
00 00 00 00 00 00 00 00 00 00 00 00 00 00 00 00 -- 026FD0
00 00 00 00 00 00 00 00 00 00 00 00 00 00 00 00 -- 026FE0
00 00 00 00 00 00 00 00 00 00 00 00 00 00 00 00 -- 026FF0
00 00 00 00 00 00 00 00 00 00 00 00 00 00 01 FE -- 027000
00 00 00 00 00 00 00 00 00 00 00 00 00 00 00 00 -- 027010
00 00 00 00 00 00 00 00 00 00 00 00 00 00 00 00 -- 027020
00 00 00 00 00 00 00 00 00 00 00 00 00 00 00 00 -- 027030
00 00 00 00 00 00 00 00 00 00 00 00 00 00 00 00 -- 027040
00 00 00 00 00 00 00 00 00 00 00 00 00 00 00 00 -- 027050
00 00 00 00 00 00 00 00 00 00 00 00 00 00 00 00 -- 027060
00 00 00 00 00 00 00 00 00 00 00 00 00 00 00 00 -- 027070
00 00 00 00 00 00 00 00 00 00 00 00 00 00 00 00 -- 027080
00 00 00 00 00 00 00 00 00 00 00 00 00 00 00 00 -- 027090
00 00 00 00 00 00 00 00 00 00 00 00 00 00 00 00 -- 0270A0
00 00 00 00 00 00 00 00 00 00 00 00 00 00 00 00 -- 0270B0
00 00 00 00 00 00 00 00 00 00 00 00 00 00 00 00 -- 0270C0
00 00 00 00 00 00 00 00 00 00 00 00 00 00 00 00 -- 0270D0
00 00 00 00 00 00 00 00 00 00 00 00 00 00 00 00 -- 0270E0
00 00 00 00 00 00 00 00 00 00 00 00 00 00 00 00 -- 0270F0
00 00 00 00 00 00 00 00 00 00 00 00 00 00 00 00 -- 027100
00 00 00 00 00 00 00 00 00 00 00 00 00 00 00 00 -- 027110
00 00 00 00 00 00 00 00 00 00 00 00 00 00 00 00 -- 027120
00 00 00 00 00 00 00 00 00 00 00 00 00 00 00 00 -- 027130
00 00 00 00 00 00 00 00 00 00 00 00 00 00 00 00 -- 027140
00 00 00 00 00 00 00 00 00 00 00 00 00 00 00 00 -- 027150
00 00 00 00 00 00 00 00 00 00 00 00 00 00 00 00 -- 027160
00 00 00 00 00 00 00 00 00 00 00 00 00 00 00 00 -- 027170
00 00 00 00 00 00 00 00 00 00 00 00 00 00 00 00 -- 027180
00 00 00 00 00 00 00 00 00 00 00 00 00 00 00 00 -- 027190
00 00 00 00 00 00 00 00 00 00 00 00 00 00 00 00 -- 0271A0
00 00 00 00 00 00 00 00 00 00 00 00 00 00 00 00 -- 0271B0
00 00 00 00 00 00 00 00 00 00 00 00 00 00 00 00 -- 0271C0
00 00 00 00 00 00 00 00 00 00 00 00 00 00 00 00 -- 0271D0
00 00 00 00 00 00 00 00 00 00 00 00 00 00 00 00 -- 0271E0
00 00 00 00 00 00 00 00 00 00 00 00 00 00 00 00 -- 0271F0
00 00 00 00 00 00 00 00 00 00 00 00 00 00 01 FE -- 027200
00 00 00 00 00 00 00 00 00 00 00 00 00 00 00 00 -- 027210
00 00 00 00 00 00 00 00 00 00 00 00 00 00 00 00 -- 027220
00 00 00 00 00 00 00 00 00 00 00 00 00 00 00 00 -- 027230
00 00 00 00 00 00 00 00 00 00 00 00 00 00 00 00 -- 027240
00 00 00 00 00 00 00 00 00 00 00 00 00 00 00 00 -- 027250
00 00 00 00 00 00 00 00 00 00 00 00 00 00 00 00 -- 027260
00 00 00 00 00 00 00 00 00 00 00 00 00 00 00 00 -- 027270
00 00 00 00 00 00 00 00 00 00 00 00 00 00 00 00 -- 027280
00 00 00 00 00 00 00 00 00 00 00 00 00 00 00 00 -- 027290
00 00 00 00 00 00 00 00 00 00 00 00 00 00 00 00 -- 0272A0
00 00 00 00 00 00 00 00 00 00 00 00 00 00 00 00 -- 0272B0
```

```
00 00 00 00 00 00 00 00 00 00 00 00 00 00 00 00 -- 0272C0
00 00 00 00 00 00 00 00 00 00 00 00 00 00 00 00 -- 0272D0
00 00 00 00 00 00 00 00 00 00 00 00 00 00 00 00 -- 0272E0
00 00 00 00 00 00 00 00 00 00 00 00 00 00 00 00 -- 0272F0
00 00 00 00 00 00 00 00 00 00 00 00 00 00 00 00 -- 027300
00 00 00 00 00 00 00 00 00 00 00 00 00 00 00 00 -- 027310

00 00 00 00 00 00 00 00 00 00 00 00 00 00 00 00 -- 027320
00 00 00 00 00 00 00 00 00 00 00 00 00 00 00 00 -- 027330
00 00 00 00 00 00 00 00 00 00 00 00 00 00 00 00 -- 027340
00 00 00 00 00 00 00 00 00 00 00 00 00 00 00 00 -- 027350
00 00 00 00 00 00 00 00 00 00 00 00 00 00 00 00 -- 027360
00 00 00 00 00 00 00 00 00 00 00 00 00 00 00 00 -- 027370
00 00 00 00 00 00 00 00 00 00 00 00 00 00 00 00 -- 027380
00 00 00 00 00 00 00 00 00 00 00 00 00 00 00 00 -- 027390
00 00 00 00 00 00 00 00 00 00 00 00 00 00 00 00 -- 0273A0
00 00 00 00 00 00 00 00 00 00 00 00 00 00 00 00 -- 0273B0
00 00 00 00 00 00 00 00 00 00 00 00 00 00 00 00 -- 0273C0
00 00 00 00 00 00 00 00 00 00 00 00 00 00 00 00 -- 0273D0
00 00 00 00 00 00 00 00 00 00 00 00 00 00 00 00 -- 0273E0
00 00 00 00 00 00 00 00 00 00 00 00 00 00 00 00 -- 0273F0
00 00 00 00 00 00 00 00 00 00 00 00 00 00 01 FE -- 027400
00 00 00 00 00 00 00 00 00 00 00 00 00 00 00 00 -- 027410
00 00 00 00 00 00 00 00 00 00 00 00 00 00 00 00 -- 027420
00 00 00 00 00 00 00 00 00 00 00 00 00 00 00 00 -- 027430
00 00 00 00 00 00 00 00 00 00 00 00 00 00 00 00 -- 027440
00 00 00 00 00 00 00 00 00 00 00 00 00 00 00 00 -- 027450
00 00 00 00 00 00 00 00 00 00 00 00 00 00 00 00 -- 027460
00 00 00 00 00 00 00 00 00 00 00 00 00 00 00 00 -- 027470
00 00 00 00 00 00 00 00 00 00 00 00 00 00 00 00 -- 027480
00 00 00 00 00 00 00 00 00 00 00 00 00 00 00 00 -- 027490
00 00 00 00 00 00 00 00 00 00 00 00 00 00 00 00 -- 0274A0
00 00 00 00 00 00 00 00 00 00 00 00 00 00 00 00 -- 0274B0
00 00 00 00 00 00 00 00 00 00 00 00 00 00 00 00 -- 0274C0
00 00 00 00 00 00 00 00 00 00 00 00 00 00 00 00 -- 0274D0
00 00 00 00 00 00 00 00 00 00 00 00 00 00 00 00 -- 0274E0
00 00 00 00 00 00 00 00 00 00 00 00 00 00 00 00 -- 0274F0
00 00 00 00 00 00 00 00 00 00 00 00 00 00 00 00 -- 027500
00 00 00 00 00 00 00 00 00 00 00 00 00 00 00 00 -- 027510
00 00 00 00 00 00 00 00 00 00 00 00 00 00 00 00 -- 027520
00 00 00 00 00 00 00 00 00 00 00 00 00 00 00 00 -- 027530
00 00 00 00 00 00 00 00 00 00 00 00 00 00 00 00 -- 027540
00 00 00 00 00 00 00 00 00 00 00 00 00 00 00 00 -- 027550
00 00 00 00 00 00 00 00 00 00 00 00 00 00 00 00 -- 027560
00 00 00 00 00 00 00 00 00 00 00 00 00 00 00 00 -- 027570
00 00 00 00 00 00 00 00 00 00 00 00 00 00 00 00 -- 027580
00 00 00 00 00 00 00 00 00 00 00 00 00 00 00 00 -- 027590
00 00 00 00 00 00 00 00 00 00 00 00 00 00 00 00 -- 0275A0
00 00 00 00 00 00 00 00 00 00 00 00 00 00 00 00 -- 0275B0
00 00 00 00 00 00 00 00 00 00 00 00 00 00 00 00 -- 0275C0
00 00 00 00 00 00 00 00 00 00 00 00 00 00 00 00 -- 0275D0
00 00 00 00 00 00 00 00 00 00 00 00 00 00 00 00 -- 0275E0
00 00 00 00 00 00 00 00 00 00 00 00 00 00 00 00 -- 0275F0
00 00 00 00 00 00 00 00 00 00 00 00 00 00 01 FE -- 027600
00 00 00 00 00 00 00 00 00 00 00 00 00 00 00 00 -- 027610
00 00 00 00 00 00 00 00 00 00 00 00 00 00 00 00 -- 027620
00 00 00 00 00 00 00 00 00 00 00 00 00 00 00 00 -- 027630
00 00 00 00 00 00 00 00 00 00 00 00 00 00 00 00 -- 027640
00 00 00 00 00 00 00 00 00 00 00 00 00 00 00 00 -- 027650
00 00 00 00 00 00 00 00 00 00 00 00 00 00 00 00 -- 027660
```

```
00 00 00 00 00 00 00 00 00 00 00 00 00 00 00 00 -- 027670
00 00 00 00 00 00 00 00 00 00 00 00 00 00 00 00 -- 027680
00 00 00 00 00 00 00 00 00 00 00 00 00 00 00 00 -- 027690
00 00 00 00 00 00 00 00 00 00 00 00 00 00 00 00 -- 0276A0
00 00 00 00 00 00 00 00 00 00 00 00 00 00 00 00 -- 0276B0

00 00 00 00 00 00 00 00 00 00 00 00 00 00 00 00 -- 0276C0
00 00 00 00 00 00 00 00 00 00 00 00 00 00 00 00 -- 0276D0
00 00 00 00 00 00 00 00 00 00 00 00 00 00 00 00 -- 0276E0
00 00 00 00 00 00 00 00 00 00 00 00 00 00 00 00 -- 0276F0
00 00 00 00 00 00 00 00 00 00 00 00 00 00 00 00 -- 027700
00 00 00 00 00 00 00 00 00 00 00 00 00 00 00 00 -- 027710
00 00 00 00 00 00 00 00 00 00 00 00 00 00 00 00 -- 027720
00 00 00 00 00 00 00 00 00 00 00 00 00 00 00 00 -- 027730
00 00 00 00 00 00 00 00 00 00 00 00 00 00 00 00 -- 027740
00 00 00 00 00 00 00 00 00 00 00 00 00 00 00 00 -- 027750
00 00 00 00 00 00 00 00 00 00 00 00 00 00 00 00 -- 027760
00 00 00 00 00 00 00 00 00 00 00 00 00 00 00 00 -- 027770
00 00 00 00 00 00 00 00 00 00 00 00 00 00 00 00 -- 027780
00 00 00 00 00 00 00 00 00 00 00 00 00 00 00 00 -- 027790
00 00 00 00 00 00 00 00 00 00 00 00 00 00 00 00 -- 0277A0
00 00 00 00 00 00 00 00 00 00 00 00 00 00 00 00 -- 0277B0
00 00 00 00 00 00 00 00 00 00 00 00 00 00 00 00 -- 0277C0
00 00 00 00 00 00 00 00 00 00 00 00 00 00 0G 00 -- 0277D0
00 00 00 00 00 00 00 00 00 00 00 00 00 00 00 00 -- 0277E0
00 00 00 00 00 00 00 00 00 00 00 00 00 00 00 00 -- 0277F0
00 00 00 00 00 00 00 00 00 00 00 00 00 00 01 FE -- 027800
00 00 00 00 00 00 00 00 00 00 00 00 00 00 00 00 -- 027810
00 00 00 00 00 00 00 00 00 00 00 00 00 00 00 00 -- 027820
00 00 00 00 00 00 00 00 00 00 00 00 00 00 00 00 -- 027830
00 00 00 00 00 00 00 00 00 00 00 00 00 00 00 00 -- 027840
00 00 00 00 00 00 00 00 00 00 00 00 00 00 00 00 -- 027850
00 00 00 00 00 00 00 00 00 00 00 00 00 00 00 00 -- 027860
00 00 00 00 00 00 00 00 00 00 00 00 00 00 00 00 -- 027870
00 00 00 00 00 00 00 00 00 00 00 00 00 00 00 00 -- 027880
00 00 00 00 00 00 00 00 00 00 00 00 00 00 00 00 -- 027890
00 00 00 00 00 00 00 00 00 00 00 00 00 00 00 00 -- 0278A0
00 00 00 00 00 00 00 00 00 00 00 00 00 00 00 00 -- 0278B0
00 00 00 00 00 00 00 00 00 00 00 00 00 00 00 00 -- 0278C0
00 00 00 00 00 00 00 00 00 00 00 00 00 00 00 00 -- 0278D0
00 00 00 00 00 00 00 00 00 00 00 00 00 00 00 00 -- 0278E0
00 00 00 00 00 00 00 00 00 00 00 00 00 00 00 00 -- 0278F0
00 00 00 00 00 00 00 00 00 00 00 00 00 00 00 00 -- 027900
00 00 00 00 00 00 00 00 00 00 00 00 00 00 00 00 -- 027910
00 00 00 00 00 00 00 00 00 00 00 00 00 00 00 00 -- 027920
00 00 00 00 00 00 00 00 00 00 00 00 00 00 00 00 -- 027930
00 00 00 00 00 00 00 00 00 00 00 00 00 00 00 00 -- 027940
00 00 00 00 00 00 00 00 00 00 00 00 00 00 00 00 -- 027950
00 00 00 00 00 00 00 00 00 00 00 00 00 00 00 00 -- 027960
00 00 00 00 00 00 00 00 00 00 00 00 00·00 00 00 -- 027970
00 00 00 00 00 00 00 00 00 00 00 00 00 00 00 00 -- 027980
00 00 00 00 00 00 00 00 00 00 00 00 00 00 00 00 -- 027990
00 00 00 00 00 00 00 00 00 00 00 00 00 00 00 00 -- 0279A0
00 00 00 00 00 00 00 00 00 00 00 00 00 00 00 00 -- 0279B0
00 00 00 00 00 00 00 00 00 00 00 00 00 00 00 00 -- 0279C0
00 00 00 00 00 00 00 00 00 00 00 00 00 00 00 00 -- 0279D0
00 00 00 00 00 00 00 00 00 00 00 00 00 00 00 00 -- 0279E0
00 00 00 00 00 00 00 00 00 00 00 00 00 00 00 00 -- 0279F0
00 00 00 00 00 00 00 00 00 00 00 00 00 00 01 FE -- 027A00
00 00 00 00 00 00 00 00 00 00 00 00 00 00 00 00 -- 027A10
```

```
00  00  00  00  00  00  00  00  00  00  00  00  00  00  00  00  --  027A20
00  00  00  00  00  00  00  00  00  00  00  00  00  00  00  00  --  027A30
00  00  00  00  00  00  00  00  00  00  00  00  00  00  00  00  --  027A40
00  00  00  00  00  00  00  00  00  00  00  00  00  00  00  00  --  027A50

00  00  00  00  00  00  00  00  00  00  00  00  00  00  00  00  --  027A60
00  00  00  00  00  00  00  00  00  00  00  00  00  00  00  00  --  027A70
00  00  00  00  00  00  00  00  00  00  00  00  00  00  00  00  --  027A80
00  00  00  00  00  00  00  00  00  00  00  00  00  00  00  00  --  027A90
00  00  00  00  00  00  00  00  00  00  00  00  00  00  00  00  --  027AA0
00  00  00  00  00  00  00  00  00  00  00  00  00  00  00  00  --  027AB0
00  00  00  00  00  00  00  00  00  00  00  00  00  00  00  00  --  027AC0
00  00  00  00  00  00  00  00  00  00  00  00  00  00  00  00  --  027AD0
00  00  00  00  00  00  00  00  00  00  00  00  00  00  00  00  --  027AE0
00  00  00  00  00  00  00  00  00  00  00  00  00  00  00  00  --  027AF0
00  00  00  00  00  00  00  00  00  00  00  00  00  00  00  00  --  027B00
00  00  00  00  00  00  00  00  00  00  00  00  00  00  00  00  --  027B10
00  00  00  00  00  00  00  00  00  00  00  00  00  00  00  00  --  027B20
00  00  00  00  00  00  00  00  00  00  00  00  00  00  00  00  --  027B30
00  00  00  00  00  00  00  00  00  00  00  00  00  00  00  00  --  027B40
00  00  00  00  00  00  00  00  00  00  00  00  00  00  00  00  --  027B50
00  00  00  00  00  00  00  00  00  00  00  00  00  00  00  00  --  027B60
00  00  00  00  00  00  00  00  00  00  00  00  00  00  00  00  --  027B70
00  00  00  00  00  00  00  00  00  00  00  00  00  00  00  00  --  027B80
00  00  00  00  00  00  00  00  00  00  00  00  00  00  00  00  --  027B90
00  00  00  00  00  00  00  00  00  00  00  00  00  00  00  00  --  027BA0
00  00  00  00  00  00  00  00  00  00  00  00  00  00  00  00  --  027BB0
00  00  00  00  00  00  00  00  00  00  00  00  00  00  00  00  --  027BC0
00  00  00  00  00  00  00  00  00  00  00  00  00  00  00  00  --  027BD0
00  00  00  00  00  00  00  00  00  00  00  00  00  00  00  00  --  027BE0
00  00  00  00  00  00  00  00  00  00  00  00  00  00  00  00  --  027BF0
00  00  00  00  00  00  00  00  00  00  00  00  00  00  01  FE  --  027C00
00  00  00  00  00  00  00  00  00  00  00  00  00  00  00  00  --  027C10
00  00  00  00  00  00  00  00  00  00  00  00  00  00  00  00  --  027C20
00  00  00  00  00  00  00  00  00  00  00  00  00  00  00  00  --  027C30
00  00  00  00  00  00  00  00  00  00  00  00  00  00  00  00  --  027C40
00  00  00  00  00  00  00  00  00  00  00  00  00  00  00  00  --  027C50
00  00  00  00  00  00  00  00  00  00  00  00  00  00  00  00  --  027C60
00  00  00  00  00  00  00  00  00  00  00  00  00  00  00  00  --  027C70
00  00  00  00  00  00  00  00  00  00  00  00  00  00  00  00  --  027C80
00  00  00  00  00  00  00  00  00  00  00  00  00  00  00  00  --  027C90
00  00  00  00  00  00  00  00  00  00  00  00  00  00  00  00  --  027CA0
00  00  00  00  00  00  00  00  00  00  00  00  00  00  00  00  --  027CB0
00  00  00  00  00  00  00  00  00  00  00  00  00  00  00  00  --  027CC0
00  00  00  00  00  00  00  00  00  00  00  00  00  00  00  00  --  027CD0
00  00  00  00  00  00  00  00  00  00  00  00  00  00  00  00  --  027CE0
00  00  00  00  00  00  00  00  00  00  00  00  00  00  00  00  --  027CF0
00  00  00  00  00  00  00  00  00  00  00  00  00  00  00  00  --  027D00
00  00  00  00  00  00  00  00  00  00  00  00  00  00  00  00  --  027D10
00  00  00  00  00  00  00  00  00  00  00  00  00  00  00  00  --  027D20
00  00  00  00  00  00  00  00  00  00  00  00  00  00  00  00  --  027D30
00  00  00  00  00  00  00  00  00  00  00  00  00  00  00  00  --  027D40
00  00  00  00  00  00  00  00  00  00  00  00  00  00  00  00  --  027D50
00  00  00  00  00  00  00  00  00  00  00  00  00  00  00  00  --  027D60
00  00  00  00  00  00  00  00  00  00  00  00  00  00  00  00  --  027D70
00  00  00  00  00  00  00  00  00  00  00  00  00  00  00  00  --  027D80
00  00  00  00  00  00  00  00  00  00  00  00  00  00  00  00  --  027D90
00  00  00  00  00  00  00  00  00  00  00  00  00  00  00  00  --  027DA0
00  00  00  00  00  00  00  00  00  00  00  00  00  00  00  00  --  027DB0
00  00  00  00  00  00  00  00  00  00  00  00  00  00  00  00  --  027DC0
```

```
00 00 00 00 00 00 00 00 00 00 00 00 00 00 00 00 -- 027DD0
00 00 00 00 00 00 00 00 00 00 00 00 00 00 00 00 -- 027DE0
00 00 00 00 00 00 00 00 00 00 00 00 00 00 00 00 -- 027DF0

00 00 00 00 00 00 00 00 00 00 00 00 00 00 01 FE -- 027E00
00 00 00 00 00 00 00 00 00 00 00 00 00 00 00 00 -- 027E10
00 00 00 00 00 00 00 00 00 00 00 00 00 00 00 00 -- 027E20
00 00 00 00 00 00 00 00 00 00 00 00 00 00 00 00 -- 027E30
00 00 00 00 00 00 00 00 00 00 00 00 00 00 00 00 -- 027E40
00 00 00 00 00 00 00 00 00 00 00 00 00 00 00 00 -- 027E50
00 00 00 00 00 00 00 00 00 00 00 00 00 00 00 00 -- 027E60
00 00 00 00 00 00 00 00 00 00 00 00 00 00 00 00 -- 027E70
00 00 00 00 00 00 00 00 00 00 00 00 00 00 00 00 -- 027E80
00 00 00 00 00 00 00 00 00 00 00 00 00 00 00 00 -- 027E90
00 00 00 00 00 00 00 00 00 00 00 00 00 00 00 00 -- 027EA0
00 00 00 00 00 00 00 00 00 00 00 00 00 00 00 00 -- 027EB0
00 00 00 00 00 00 00 00 00 00 00 00 00 00 00 00 -- 027EC0
00 00 00 00 00 00 00 00 00 00 00 00 00 00 00 00 -- 027ED0
00 00 00 00 00 00 00 00 00 00 00 00 00 00 00 00 -- 027EE0
00 00 00 00 00 00 00 00 00 00 00 00 00 00 00 00 -- 027EF0
00 00 00 00 00 00 00 00 00 00 00 00 00 00 00 00 -- 027F00
00 00 00 00 00 00 00 00 00 00 00 00 00 00 00 00 -- 027F10
00 00 00 00 00 00 00 00 00 00 00 00 00 00 00 00 -- 027F20
00 00 00 00 00 00 00 00 00 00 00 00 00 00 00 00 -- 027F30
00 00 00 00 00 00 00 00 00 00 00 00 00 00 00 00 -- 027F40
00 00 00 00 00 00 00 00 00 00 00 00 00 00 00 00 -- 027F50
00 00 00 00 00 00 00 00 00 00 00 00 00 00 00 00 -- 027F60
00 00 00 00 00 00 00 00 00 00 00 00 00 00 00 00 -- 027F70
00 00 00 00 00 00 00 00 00 00 00 00 00 00 00 00 -- 027F80
00 00 00 00 00 00 00 00 00 00 00 00 00 00 00 00 -- 027F90
00 00 00 00 00 00 00 00 00 00 00 00 00 00 00 00 -- 027FA0
00 00 00 00 00 00 00 00 00 00 00 00 00 00 00 00 -- 027FB0
00 00 00 00 00 00 00 00 00 00 00 00 00 00 00 00 -- 027FC0
00 00 00 00 00 00 00 00 00 00 00 00 00 00 00 00 -- 027FD0
00 00 00 00 00 00 00 00 00 00 00 00 00 00 00 00 -- 027FE0
00 00 00 00 00 00 00 00 00 00 00 00 00 00 00 00 -- 027FF0
00 00 00 00 00 00 00 00 00 00 00 00 00 00 01 FE -- 028000
00 00 00 00 00 00 00 00 00 00 00 00 00 00 00 00 -- 028010
00 00 00 00 00 00 00 00 00 00 00 00 00 00 00 00 -- 028020
00 00 00 00 00 00 00 00 00 00 00 00 00 00 00 00 -- 028030
00 00 00 00 00 00 00 00 00 00 00 00 00 00 00 00 -- 028040
00 00 00 00 00 00 00 00 00 00 00 00 00 00 00 00 -- 028050
00 00 00 00 00 00 00 00 00 00 00 00 00 00 00 00 -- 028060
00 00 00 00 00 00 00 00 00 00 00 00 00 00 00 00 -- 028070
00 00 00 00 00 00 00 00 00 00 00 00 00 00 00 00 -- 028080
00 00 00 00 00 00 00 00 00 00 00 00 00 00 00 00 -- 028090
00 00 00 00 00 00 00 00 00 00 00 00 00 00 00 00 -- 0280A0
00 00 00 00 00 00 00 00 00 00 00 00 00 00 00 00 -- 0280B0
00 00 00 00 00 00 00 00 00 00 00 00 00 00 00 00 -- 0280C0
00 00 00 00 00 00 00 00 00 00 00 00 00 00 00 00 -- 0280D0
00 00 00 00 00 00 00 00 00 00 00 00 00 00 00 00 -- 0280E0
00 00 00 00 00 00 00 00 00 00 00 00 00 00 00 00 -- 0280F0
00 00 00 00 00 00 00 00 00 00 00 00 00 00 00 00 -- 028100
00 00 00 00 00 00 00 00 00 00 00 00 00 00 00 00 -- 028110
00 00 00 00 00 00 00 00 00 00 00 00 00 00 00 00 -- 028120
00 00 00 00 00 00 00 00 00 00 00 00 00 00 00 00 -- 028130
00 00 00 00 00 00 00 00 00 00 00 00 00 00 00 00 -- 028140
00 00 00 00 00 00 00 00 00 00 00 00 00 00 00 00 -- 028150
00 00 00 00 00 00 00 00 00 00 00 00 00 00 00 00 -- 028160
00 00 00 00 00 00 00 00 00 00 00 00 00 00 00 00 -- 028170
```

```
00 00 00 00 00 00 00 00 00 00 00 00 00 00 00 00 -- 028180
00 00 00 00 00 00 00 00 00 00 00 00 00 00 00 00 -- 028190

00 00 00 00 00 00 00 00 00 00 00 00 00 00 00 00 -- 0281A0
00 00 00 00 00 00 00 00 00 00 00 00 00 00 00 00 -- 0281B0
00 00 00 00 00 00 00 00 00 00 00 00 00 00 00 00 -- 0281C0
00 00 00 00 00 00 00 00 00 00 00 00 00 00 00 00 -- 0281D0
00 00 00 00 00 00 00 00 00 00 00 00 00 00 00 00 -- 0281E0
00 00 00 00 00 00 00 00 00 00 00 00 00 00 00 00 -- 0281F0
00 00 00 00 00 00 00 00 00 00 00 00 00 00 01 FE -- 028200
00 00 00 00 00 00 00 00 00 00 00 00 00 00 00 00 -- 028210
00 00 00 00 00 00 00 00 00 00 00 00 00 00 00 00 -- 028220
00 00 00 00 00 00 00 00 00 00 00 00 00 00 00 00 -- 028230
00 00 00 00 00 00 00 00 00 00 00 00 00 00 00 00 -- 028240
00 00 00 00 00 00 00 00 00 00 00 00 00 00 00 00 -- 028250
00 00 00 00 00 00 00 00 00 00 00 00 00 00 00 00 -- 028260
00 00 00 00 00 00 00 00 00 00 00 00 00 00 00 00 -- 028270
00 00 00 00 00 00 00 00 00 00 00 00 00 00 00 00 -- 028280
00 00 00 00 00 00 00 00 00 00 00 00 00 00 00 00 -- 028290
00 00 00 00 00 00 00 00 00 00 00 00 00 00 00 00 -- 0282A0
00 00 00 00 00 00 00 00 00 00 00 00 00 00 00 00 -- 0282B0
00 00 00 00 00 00 00 00 00 00 00 00 00 00 00 00 -- 0282C0
00 00 00 00 00 00 00 00 00 00 00 00 00 00 00 00 -- 0282D0
00 00 00 00 00 00 00 00 00 00 00 00 00 00 00 00 -- 0282E0
00 00 00 00 00 00 00 00 00 00 00 00 00 00 00 00 -- 0282F0
00 00 00 00 00 00 00 00 00 00 00 00 00 00 00 00 -- 028300
00 00 00 00 00 00 00 00 00 00 00 00 00 00 00 00 -- 028310
00 00 00 00 00 00 00 00 00 00 00 00 00 00 00 00 -- 028320
00 00 00 00 00 00 00 00 00 00 00 00 00 00 00 00 -- 028330
00 00 00 00 00 00 00 00 00 00 00 00 00 00 00 00 -- 028340
00 00 00 00 00 00 00 00 00 00 00 00 00 00 00 00 -- 028350
00 00 00 00 00 00 00 00 00 00 00 00 00 00 00 00 -- 028360
00 00 00 00 00 00 00 00 00 00 00 00 00 00 00 00 -- 028370
00 00 00 00 00 00 00 00 00 00 00 00 00 00 00 00 -- 028380
00 00 00 00 00 00 00 00 00 00 00 00 00 00 00 00 -- 028390
00 00 00 00 00 00 00 00 00 00 00 00 00 00 00 00 -- 0283A0
00 00 00 00 00 00 00 00 00 00 00 00 00 00 00 00 -- 0283B0
00 00 00 00 00 00 00 00 00 00 00 00 00 00 00 00 -- 0283C0
00 00 00 00 00 00 00 00 00 00 00 00 00 00 00 00 -- 0283D0
00 00 00 00 00 00 00 00 00 00 00 00 00 00 00 00 -- 0283E0
00 00 00 00 00 00 00 00 00 00 00 00 00 00 00 00 -- 0283F0
00 00 00 00 00 00 00 00 00 00 00 00 00 00 01 FE -- 028400
00 00 00 00 00 00 00 00 00 00 00 00 00 00 00 00 -- 028410
00 00 00 00 00 00 00 00 00 00 00 00 00 00 00 00 -- 028420
00 00 00 00 00 00 00 00 00 00 00 00 00 00 00 00 -- 028430
00 00 00 00 00 00 00 00 00 00 00 00 00 00 00 00 -- 028440
00 00 00 00 00 00 00 00 00 00 00 00 00 00 00 00 -- 028450
00 00 00 00 00 00 00 00 00 00 00 00 00 00 00 00 -- 028460
00 00 00 00 00 00 00 00 00 00 00 00 00 00 00 00 -- 028470
00 00 00 00 00 00 00 00 00 00 00 00 00 00 00 00 -- 028480
00 00 00 00 00 00 00 00 00 00 00 00 00 00 00 00 -- 028490
00 00 00 00 00 00 00 00 00 00 00 00 00 00 00 00 -- 0284A0
00 00 00 00 00 00 00 00 00 00 00 00 00 00 00 00 -- 0284B0
00 00 00 00 00 00 00 00 00 00 00 00 00 00 00 00 -- 0284C0
00 00 00 00 00 00 00 00 00 00 00 00 00 00 00 00 -- 0284D0
00 00 00 00 00 00 00 00 00 00 00 00 00 00 00 00 -- 0284E0
00 00 00 00 00 00 00 00 00 00 00 00 00 00 00 00 -- 0284F0
00 00 00 00 00 00 00 00 00 00 00 00 00 00 00 00 -- 028500
00 00 00 00 00 00 00 00 00 00 00 00 00 00 00 00 -- 028510
00 00 00 00 00 00 00 00 00 00 00 00 00 00 00 00 -- 028520
```

```
00 00 00 00 00 00 00 00 00 00 00 00 00 00 00 00 -- 028530

00 00 00 00 00 00 00 00 00 00 00 00 00 00 00 00 -- 028540
00 00 00 00 00 00 00 00 00 00 00 00 00 00 00 00 -- 028550
00 00 00 00 00 00 00 00 00 00 00 00 00 00 00 00 -- 028560
00 00 00 00 00 00 00 00 00 00 00 00 00 00 00 00 -- 028570
00 00 00 00 00 00 00 00 00 00 00 00 00 00 00 00 -- 028580
00 00 00 00 00 00 00 00 00 00 00 00 00 00 00 00 -- 028590
3D 20 6D 75 6E 5F 67 65 73 20 00 00 00 00 00 00 -- 0285A0
20 3D 20 6D 75 6E 5F 67 65 73 20 00 0A 64 25 20 -- 0285B0
25 20 3D 20 6D 75 6E 5F 67 65 73 20 00 0A 64 25 -- 0285C0
6F 70 64 70 75 00 64 6E 65 70 73 75 73 00 0A 64 -- 0285D0
73 65 72 00 6D 79 6C 6F 70 64 70 75 00 6D 79 6C -- 0285E0
25 20 3D 20 6D 75 6E 5F 67 65 73 20 00 65 6D 75 -- 0285F0
20 3D 20 6D 75 6E 5F 67 65 73 20 00 0A 64 01 FE -- 028600
00 00 00 00 00 00 00 00 00 00 00 00 00 0A 64 25 -- 028610
00 00 00 00 00 00 00 00 00 00 00 00 00 00 00 00 -- 028620
00 00 00 00 00 00 00 00 00 00 00 00 00 00 00 00 -- 028630
00 00 00 00 00 00 00 00 00 00 00 00 00 00 00 00 -- 028640
00 00 00 00 00 00 00 00 00 00 00 00 00 00 00 00 -- 028650
00 00 00 00 00 00 00 00 00 00 00 00 00 00 00 00 -- 028660
00 00 00 00 00 00 00 00 00 00 00 00 00 00 00 00 -- 028670
00 00 00 00 00 00 00 00 00 00 00 00 00 00 00 00 -- 028680
00 00 00 00 00 00 00 00 00 00 00 00 00 00 00 00 -- 028690
00 00 00 00 00 00 00 00 00 00 00 00 00 00 00 00 -- 0286A0
00 00 00 00 00 00 00 00 00 00 00 00 00 00 00 00 -- 0286B0
00 00 00 00 00 00 00 00 00 00 00 00 00 00 00 00 -- 0286C0
00 00 00 00 00 00 00 00 00 00 00 00 00 00 00 00 -- 0286D0
00 00 00 00 00 00 00 00 00 00 00 00 00 00 00 00 -- 0286E0
00 00 00 00 00 00 00 00 00 00 00 00 00 00 00 00 -- 0286F0
00 00 00 00 00 00 00 00 00 00 00 00 00 00 00 00 -- 028700
00 00 00 00 00 00 00 00 00 00 00 00 00 00 00 00 -- 028710
00 00 00 00 00 00 00 00 00 00 00 00 00 00 00 00 -- 028720
00 00 00 00 00 00 00 00 00 00 00 00 00 00 00 00 -- 028730
00 00 00 00 00 00 00 00 00 00 00 00 00 00 00 00 -- 028740
00 00 00 00 00 00 00 00 00 00 00 00 00 00 00 00 -- 028750
00 00 00 00 00 00 00 00 00 00 00 00 00 00 00 00 -- 028760
00 00 00 00 00 00 00 00 00 00 00 00 00 00 00 00 -- 028770
00 00 00 00 00 00 00 00 00 00 00 00 00 00 00 00 -- 028780
00 00 00 00 00 00 00 00 00 00 00 00 00 00 00 00 -- 028790
00 00 00 00 00 00 00 00 00 00 00 00 00 00 00 00 -- 0287A0
00 00 00 00 00 00 00 00 00 00 00 00 00 00 00 00 -- 0287B0
00 00 00 00 00 00 00 00 00 00 00 00 00 00 00 00 -- 0287C0
00 00 00 00 00 00 00 00 00 00 00 00 00 00 00 00 -- 0287D0
00 00 00 00 00 00 00 00 00 00 00 00 00 00 00 00 -- 0287E0
00 00 00 00 00 00 00 00 00 00 00 00 00 00 00 00 -- 0287F0
00 00 00 00 00 00 00 00 00 00 00 00 00 00 01 FE -- 028800
00 00 00 00 00 00 00 00 00 00 00 00 00 00 00 00 -- 028810
00 00 00 00 00 00 00 00 00 00 00 00 00 00 00 00 -- 028820
00 00 00 00 00 00 00 00 00 00 00 00 00 00 00 00 -- 028830
00 00 00 00 00 00 00 00 00 00 00 00 00 00 00 00 -- 028840
00 00 00 00 00 00 00 00 00 00 00 00 00 00 00 00 -- 028850
00 00 00 00 00 00 00 00 00 00 00 00 00 00 00 00 -- 028860
00 00 00 00 00 00 00 00 00 00 00 00 00 00 00 00 -- 028870
00 00 00 00 00 00 00 00 00 00 00 00 00 00 00 00 -- 028880
00 00 00 00 00 00 00 00 00 00 00 00 00 00 00 00 -- 028890
00 00 00 00 00 00 00 00 00 00 00 00 00 00 00 00 -- 0288A0
00 00 00 00 00 00 00 00 00 00 00 00 00 00 00 00 -- 0288B0
00 00 00 00 00 00 00 00 00 00 00 00 00 00 00 00 -- 0288C0
00 00 00 00 00 00 00 00 00 00 00 00 00 00 00 00 -- 0288D0
```

```
00 00 00 00 00 00 00 00 00 00 00 00 00 00 00 00 -- 0288E0
00 00 00 00 00 00 00 00 00 00 00 00 00 00 00 00 -- 0288F0
00 00 00 00 00 00 00 00 00 00 00 00 00 00 00 00 -- 028900
00 00 00 00 00 00 00 00 00 00 00 00 00 00 00 00 -- 028910
00 00 00 00 00 00 00 00 00 00 00 00 00 00 00 00 -- 028920
00 00 00 00 00 00 00 00 00 00 00 00 00 00 00 00 -- 028930
00 00 00 00 00 00 00 00 00 00 00 00 00 00 00 00 -- 028940
00 00 00 00 00 00 00 00 00 00 00 00 00 00 00 00 -- 028950
00 00 00 00 00 00 00 00 00 00 00 00 00 00 00 00 -- 028960
00 00 00 00 00 00 00 00 00 00 00 00 00 00 00 00 -- 028970
00 00 00 00 00 00 00 00 00 00 00 00 00 00 00 00 -- 028980
00 00 00 00 00 00 00 00 00 00 00 00 00 00 00 00 -- 028990
00 00 00 00 00 00 00 00 00 00 00 00 00 00 00 00 -- 0289A0
00 00 00 00 00 00 00 00 00 00 00 00 00 00 00 00 -- 0289B0
00 00 00 00 00 00 00 00 00 00 00 00 00 00 00 00 -- 0289C0
00 00 00 00 00 00 00 00 00 00 00 00 00 00 00 00 -- 0289D0
00 00 00 00 00 00 00 00 00 00 00 00 00 00 00 00 -- 0289E0
00 00 00 00 00 00 00 00 00 00 00 00 00 00 00 00 -- 0289F0
00 00 00 00 00 00 00 00 00 00 00 00 00 00 01 FE -- 028A00
00 00 00 00 00 00 00 00 00 00 00 00 00 00 00 00 -- 028A10
00 00 00 00 00 00 00 00 00 00 00 00 00 00 00 00 -- 028A20
00 00 00 00 00 00 00 00 00 00 00 00 00 00 00 00 -- 028A30
00 00 00 00 00 00 00 00 00 00 00 00 00 00 00 00 -- 028A40
00 00 00 00 00 00 00 00 00 00 00 00 00 00 00 00 -- 028A50
00 00 00 00 00 00 00 00 00 00 00 00 00 00 00 00 -- 028A60
00 00 00 00 00 00 00 00 00 00 00 00 00 00 00 00 -- 028A70
00 00 00 00 00 00 00 00 00 00 00 00 00 00 00 00 -- 028A80
00 00 00 00 00 00 00 00 00 00 00 00 00 00 00 00 -- 028A90
00 00 00 00 00 00 00 00 00 00 00 00 00 00 00 00 -- 028AA0
00 00 00 00 00 00 00 00 00 00 00 00 00 00 00 00 -- 028AB0
00 00 00 00 00 00 00 00 00 00 00 00 00 00 00 00 -- 028AC0
00 00 00 00 00 00 00 00 00 00 00 00 00 00 00 00 -- 028AD0
00 00 00 00 00 00 00 00 00 00 00 00 00 00 00 00 -- 028AE0
00 00 00 00 00 00 00 00 00 00 00 00 00 00 00 00 -- 028AF0
00 00 00 00 00 00 00 00 00 00 00 00 00 00 00 00 -- 028B00
00 00 00 00 00 00 00 00 00 00 00 00 00 00 00 00 -- 028B10
00 00 00 00 00 00 00 00 00 00 00 00 00 00 00 00 -- 028B20
00 00 00 00 00 00 00 00 00 00 00 00 00 00 00 00 -- 028B30
00 00 00 00 00 00 00 00 00 00 00 00 00 00 00 00 -- 028B40
00 00 00 00 00 00 00 00 00 00 00 00 00 00 00 00 -- 028B50
00 00 00 00 00 00 00 00 00 00 00 00 00 00 00 00 -- 028B60
00 00 00 00 00 00 00 00 00 00 00 00 00 00 00 00 -- 028B70
00 00 00 00 00 00 00 00 00 00 00 00 00 00 00 00 -- 028B80
00 00 00 00 00 00 00 00 00 00 00 00 00 00 00 00 -- 028B90
00 00 00 00 00 00 00 00 00 00 00 00 00 00 00 00 -- 028BA0
00 00 00 00 00 00 00 00 00 00 00 00 00 00 00 00 -- 028BB0
00 00 00 00 00 00 00 00 00 00 00 00 00 00 00 00 -- 028BC0
00 00 00 00 00 00 00 00 00 00 00 00 00 00 00 00 -- 028BD0
00 00 00 00 00 00 00 00 00 00 00 00 00 00 00 00 -- 028BE0
00 00 00 00 00 00 00 00 00 00 00 00 00 00 00 00 -- 028BF0
00 00 00 00 00 00 00 00 00 00 00 00 00 00 01 FE -- 028C00
00 00 00 00 00 00 00 00 00 00 00 00 00 00 00 00 -- 028C10
00 00 00 00 00 00 00 00 00 00 00 00 00 00 00 00 -- 028C20
00 00 00 00 00 00 00 00 00 00 00 00 00 00 00 00 -- 028C30
00 00 00 00 00 00 00 00 00 00 00 00 00 00 00 00 -- 028C40
00 00 00 00 00 00 00 00 00 00 00 00 00 00 00 00 -- 028C50
00 00 00 00 00 00 00 00 00 00 00 00 00 00 00 00 -- 028C60
00 00 00 00 00 00 00 00 00 00 00 00 00 00 00 00 -- 028C70
```

```
00  00  00  00  00  00  00  00  00  00  00  00  00  00  00  00  --  028C80
00  00  00  00  00  00  00  00  00  00  00  00  00  00  00  00  --  028C90
00  00  00  00  00  00  00  00  00  00  00  00  00  00  00  00  --  028CA0
00  00  00  00  00  00  00  00  00  00  00  00  00  00  00  00  --  028CB0
00  00  00  00  00  00  00  00  00  00  00  00  00  00  00  00  --  028CC0
00  00  00  00  00  00  00  00  00  00  00  00  00  00  00  00  --  028CD0
00  00  00  00  00  00  00  00  00  00  00  00  00  00  00  00  --  028CE0
00  00  00  00  00  00  00  00  00  00  00  00  00  00  00  00  --  028CF0
00  00  00  00  00  00  00  00  00  00  00  00  00  00  00  00  --  028D00
00  00  00  00  00  00  00  00  00  00  00  00  00  00  00  00  --  028D10
00  00  00  00  00  00  00  00  00  00  00  00  00  00  00  00  --  028D20
00  00  00  00  00  00  00  00  00  00  00  00  00  00  00  00  --  028D30
00  00  00  00  00  00  00  00  00  00  00  00  00  00  00  00  --  028D40
00  00  00  00  00  00  00  00  00  00  00  00  00  00  00  00  --  028D50
00  00  00  00  00  00  00  00  00  00  00  00  00  00  00  00  --  028D60
00  00  00  00  00  00  00  00  00  00  00  00  00  00  00  00  --  028D70
00  00  00  00  00  00  00  00  00  00  00  00  00  00  00  00  --  028D80
00  00  00  00  00  00  00  00  00  00  00  00  00  00  00  00  --  028D90
00  00  00  00  00  00  00  00  00  00  00  00  00  00  00  00  --  028DA0
00  00  00  00  00  00  00  00  00  00  00  00  00  00  00  00  --  028DB0
00  00  00  00  00  00  00  00  00  00  00  00  00  00  00  00  --  028DC0
00  00  00  00  00  00  00  00  00  00  00  00  00  00  00  00  --  028DD0
00  00  00  00  00  00  00  00  00  00  00  00  00  00  00  00  --  028DE0
00  00  00  00  00  00  00  00  00  00  00  00  00  00  00  00  --  028DF0
00  00  00  00  00  00  00  00  00  00  00  00  00  00  01  FE  --  028E00
00  00  00  00  00  00  00  00  00  00  00  00  00  00  00  00  --  028E10
00  00  00  00  00  00  00  00  00  00  00  00  00  00  00  00  --  028E20
00  00  00  00  00  00  00  00  00  00  00  00  00  00  00  00  --  028E30
00  00  00  00  00  00  00  00  00  00  00  00  00  00  00  00  --  028E40
00  00  00  00  00  00  00  00  00  00  00  00  00  00  00  00  --  028E50
00  00  00  00  00  00  00  00  00  00  00  00  00  00  00  00  --  028E60
00  00  00  00  00  00  00  00  00  00  00  00  00  00  00  00  --  028E70
00  00  00  00  00  00  00  00  00  00  00  00  00  00  00  00  --  028E80
00  00  00  00  00  00  00  00  00  00  00  00  00  00  00  00  --  028E90
00  00  00  00  00  00  00  00  00  00  00  00  00  00  00  00  --  028EA0
00  00  00  00  00  00  00  00  00  00  00  00  00  00  00  00  --  028EB0
00  00  00  00  00  00  00  00  00  00  00  00  00  00  00  00  --  028EC0
00  00  00  00  00  00  00  00  00  00  00  00  00  00  00  00  --  028ED0
00  00  00  00  00  00  00  00  00  00  00  00  00  00  00  00  --  028EE0
00  00  00  00  00  00  00  00  00  00  00  00  00  00  00  00  --  028EF0
00  00  00  00  00  00  00  00  00  00  00  00  00  00  00  00  --  028F00
00  00  00  00  00  00  00  00  00  00  00  00  00  00  00  00  --  028F10
00  00  00  00  00  00  00  00  00  00  00  00  00  00  00  00  --  028F20
00  00  00  00  00  00  00  00  00  00  00  00  00  00  00  00  --  028F30
00  00  00  00  00  00  00  00  00  00  00  00  00  00  00  00  --  028F40
00  00  00  00  00  00  00  00  00  00  00  00  00  00  00  00  --  028F50
00  00  00  00  00  00  00  00  00  00  00  00  00  00  00  00  --  028F60
00  00  00  00  00  00  00  00  00  00  00  00  00  00  00  00  --  028F70
00  00  00  00  00  00  00  00  00  00  00  00  00  00  00  00  --  028F80
00  00  00  00  00  00  00  00  00  00  00  00  00  00  00  00  --  028F90
00  00  00  00  00  00  00  00  00  00  00  00  00  00  00  00  --  028FA0
00  00  00  00  00  00  00  00  00  00  00  00  00  00  00  00  --  028FB0
00  00  00  00  00  00  00  00  00  00  00  00  00  00  00  00  --  028FC0
00  00  00  00  00  00  00  00  00  00  00  00  00  00  00  00  --  028FD0
00  00  00  00  00  00  00  00  00  00  00  00  00  00  00  00  --  028FE0
00  00  00  00  00  00  00  00  00  00  00  00  00  00  00  00  --  028FF0
00  00  00  00  00  00  00  00  00  00  00  00  00  00  01  FE  --  029000
00  00  00  00  00  00  00  00  00  00  00  00  00  00  00  00  --  029010

00  00  00  00  00  00  00  00  00  00  00  00  00  00  00  00  --  029020
```

```
00 00 00 00 00 00 00 00 00 00 00 00 00 00 00 00 -- 029030
00 00 00 00 00 00 00 00 00 00 00 00 00 00 00 00 -- 029040
00 00 00 00 00 00 00 00 00 00 00 00 00 00 00 00 -- 029050
00 00 00 00 00 00 00 00 00 00 00 00 00 00 00 00 -- 029060
00 00 00 00 00 00 00 00 00 00 00 00 00 00 00 00 -- 029070
00 00 00 00 00 00 00 00 00 00 00 00 00 00 00 00 -- 029080
00 00 00 00 00 00 00 00 00 00 00 00 00 00 00 00 -- 029090
00 00 00 00 00 00 00 00 00 00 00 00 00 00 00 00 -- 0290A0
00 00 00 00 00 00 00 00 00 00 00 00 00 00 00 00 -- 0290B0
00 00 00 00 00 00 00 00 00 00 00 00 00 00 00 00 -- 0290C0
00 00 00 00 00 00 00 00 00 00 00 00 00 00 00 00 -- 0290D0
00 00 00 00 00 00 00 00 00 00 00 00 00 00 00 00 -- 0290E0
00 00 00 00 00 00 00 00 00 00 00 00 00 00 00 00 -- 0290F0
00 00 00 00 00 00 00 00 00 00 00 00 00 00 00 00 -- 029100
00 00 00 00 00 00 00 00 00 00 00 00 00 00 00 00 -- 029110
00 00 00 00 00 00 00 00 00 00 00 00 00 00 00 00 -- 029120
00 00 00 00 00 00 00 00 00 00 00 00 00 00 00 00 -- 029130
00 00 00 00 00 00 00 00 00 00 00 00 00 00 00 00 -- 029140
00 00 00 00 00 00 00 00 00 00 00 00 00 00 00 00 -- 029150
00 00 00 00 00 00 00 00 00 00 00 00 00 00 00 00 -- 029160
00 00 00 00 00 00 00 00 00 00 00 00 00 00 00 00 -- 029170
00 00 00 00 00 00 00 00 00 00 00 00 00 00 00 00 -- 029180
00 00 00 00 00 00 00 00 00 00 00 00 00 00 00 00 -- 029190
00 00 00 00 00 00 00 00 00 00 00 00 00 00 00 00 -- 0291A0
00 00 00 00 00 00 00 00 00 00 00 00 00 00 00 00 -- 0291B0
00 00 00 00 00 00 00 00 00 00 00 00 00 00 00 00 -- 0291C0
00 00 00 00 00 00 00 00 00 00 00 00 00 00 00 00 -- 0291D0
00 00 00 00 00 00 00 00 00 00 00 00 00 00 00 00 -- 0291E0
00 00 00 00 00 00 00 00 00 00 00 00 00 00 00 00 -- 0291F0
00 00 00 00 00 00 00 00 00 00 00 00 00 00 01 FE -- 029200
00 00 00 00 00 00 00 00 00 00 00 00 00 00 00 00 -- 029210
00 00 00 00 00 00 00 00 00 00 00 00 00 00 00 00 -- 029220
00 00 00 00 00 00 00 00 00 00 00 00 00 00 00 00 -- 029230
00 00 00 00 00 00 00 00 00 00 00 00 00 00 00 00 -- 029240
00 00 00 00 00 00 00 00 00 00 00 00 00 00 00 00 -- 029250
00 00 00 00 00 00 00 00 00 00 00 00 00 00 00 00 -- 029260
00 00 00 00 00 00 00 00 00 00 00 00 00 00 00 00 -- 029270
00 00 00 00 00 00 00 00 00 00 00 00 00 00 00 00 -- 029280
00 00 00 00 00 00 00 00 00 00 00 00 00 00 00 00 -- 029290
00 00 00 00 00 00 00 00 00 00 00 00 00 00 00 00 -- 0292A0
00 00 00 00 00 00 00 00 00 00 00 00 00 00 00 00 -- 0292B0
00 00 00 00 00 00 00 00 00 00 00 00 00 00 00 00 -- 0292C0
00 00 00 00 00 00 00 00 00 00 00 00 00 00 00 00 -- 0292D0
00 00 00 00 00 00 00 00 00 00 00 00 00 00 00 00 -- 0292E0
00 00 00 00 00 00 00 00 00 00 00 00 00 00 00 00 -- 0292F0
00 00 00 00 00 00 00 00 00 00 00 00 00 00 00 00 -- 029300
00 00 00 00 00 00 00 00 00 00 00 00 00 00 00 00 -- 029310
00 00 00 00 00 00 00 00 00 00 00 00 00 00 00 00 -- 029320
00 00 00 00 00 00 00 00 00 00 00 00 00 00 00 00 -- 029330
00 00 00 00 00 00 00 00 00 00 00 00 00 00 00 00 -- 029340
00 00 00 00 00 00 00 00 00 00 00 00 00 00 00 00 -- 029350
00 00 00 00 00 00 00 00 00 00 00 00 00 00 00 00 -- 029360
00 00 00 00 00 00 00 00 00 00 00 00 00 00 00 00 -- 029370
00 00 00 00 00 00 00 00 00 00 00 00 00 00 00 00 -- 029380
00 00 00 00 00 00 00 00 00 00 00 00 00 00 00 00 -- 029390
00 00 00 00 00 00 00 00 00 00 00 00 00 00 00 00 -- 0293A0
00 00 00 00 00 00 00 00 00 00 00 00 00 00 00 00 -- 0293B0

00 00 00 00 00 00 00 00 00 00 00 00 00 00 00 00 -- 0293C0
00 00 00 00 00 00 00 00 00 00 00 00 00 00 00 00 -- 0293D0
```

```
00 00 00 00 00 00 00 00 00 00 00 00 00 00 00 00 -- 0293E0
00 00 00 00 00 00 00 00 00 00 00 00 00 00 00 00 -- 0293F0
00 00 00 00 00 00 00 00 00 00 00 00 00 00 01 FE -- 029400
00 00 00 00 00 00 00 00 00 00 00 00 00 00 00 00 -- 029410
00 00 00 00 00 00 00 00 00 00 00 00 00 00 00 00 -- 029420
00 00 00 00 00 00 00 00 00 00 00 00 00 00 00 00 -- 029430
00 00 00 00 00 00 00 00 00 00 00 00 00 00 00 00 -- 029440
00 00 00 00 00 00 00 00 00 00 00 00 00 00 00 00 -- 029450
00 00 00 00 00 00 00 00 00 00 00 00 00 00 00 00 -- 029460
00 00 00 00 00 00 00 00 00 00 00 00 00 00 00 00 -- 029470
00 00 00 00 00 00 00 00 00 00 00 00 00 00 00 00 -- 029480
00 00 00 00 00 00 00 00 00 00 00 00 00 00 00 00 -- 029490
00 00 00 00 00 00 00 00 00 00 00 00 00 00 00 00 -- 0294A0
00 00 00 00 00 00 00 00 00 00 00 00 00 00 00 00 -- 0294B0
00 00 00 00 00 00 00 00 00 00 00 00 00 00 00 00 -- 0294C0
00 00 00 00 00 00 00 00 00 00 00 00 00 00 00 00 -- 0294D0
00 00 00 00 00 00 00 00 00 00 00 00 00 00 00 00 -- 0294E0
00 00 00 00 00 00 00 00 00 00 00 00 00 00 00 00 -- 0294F0
00 00 00 00 00 00 00 00 00 00 00 00 00 00 00 00 -- 029500
00 00 00 00 00 00 00 00 00 00 00 00 00 00 00 00 -- 029510
00 00 00 00 00 00 00 00 00 00 00 00 00 00 00 00 -- 029520
00 00 00 00 00 00 00 00 00 00 00 00 00 00 00 00 -- 029530
00 00 00 00 00 00 00 00 00 00 00 00 00 00 00 00 -- 029540
00 00 00 00 00 00 00 00 00 00 00 00 00 00 00 00 -- 029550
00 00 00 00 00 00 00 00 00 00 00 00 00 00 00 00 -- 029560
00 00 00 00 00 00 00 00 00 00 00 00 00 00 00 00 -- 029570
00 00 00 00 00 00 00 00 00 00 00 00 00 00 00 00 -- 029580
00 00 00 00 00 00 00 00 00 00 00 00 00 00 00 00 -- 029590
00 00 00 00 00 00 00 00 00 00 00 00 00 00 00 00 -- 0295A0
00 00 00 00 00 00 00 00 00 00 00 00 00 00 00 00 -- 0295B0
00 00 00 00 00 00 00 00 00 00 00 00 00 00 00 00 -- 0295C0
00 00 00 00 00 00 00 00 00 00 00 00 00 00 00 00 -- 0295D0
00 00 00 00 00 00 00 00 00 00 00 00 00 00 00 00 -- 0295E0
00 00 00 00 00 00 00 00 00 00 00 00 00 00 00 00 -- 0295F0
00 00 00 00 00 00 00 00 00 00 00 00 00 01 FE -- 029600
00 00 00 00 00 00 00 00 00 00 00 00 00 00 00 00 -- 029610
00 00 00 00 00 00 00 00 00 00 00 00 00 00 00 00 -- 029620
00 00 00 00 00 00 00 00 00 00 00 00 00 00 00 00 -- 029630
00 00 00 00 00 00 00 00 00 00 00 00 00 00 00 00 -- 029640
00 00 00 00 00 00 00 00 00 00 00 00 00 00 00 00 -- 029650
00 00 00 00 00 00 00 00 00 00 00 00 00 00 00 00 -- 029660
00 00 00 00 00 00 00 00 00 00 00 00 00 00 00 00 -- 029670
00 00 00 00 00 00 00 00 00 00 00 00 00 00 00 00 -- 029680
00 00 00 00 00 00 00 00 00 00 00 00 00 00 01 00 -- 029690
00 00 00 00 00 00 00 00 00 00 00 00 00 00 00 00 -- 0296A0
00 00 00 00 00 00 00 00 00 00 00 00 00 00 00 00 -- 0296B0
00 00 00 00 00 00 00 00 00 00 00 00 00 00 00 00 -- 0296C0
00 00 00 00 00 00 00 00 00 00 00 00 00 00 00 00 -- 0296D0
00 00 00 00 00 00 00 00 00 00 00 00 00 00 00 00 -- 0296E0
00 00 00 00 00 00 00 00 00 00 00 00 00 00 00 00 -- 0296F0
00 00 00 00 00 00 00 00 00 00 00 00 00 00 00 00 -- 029700
00 00 00 00 00 00 00 00 00 00 00 00 00 00 00 00 -- 029710
00 00 00 00 00 00 00 00 00 00 00 00 00 00 00 00 -- 029720
00 00 00 00 00 00 00 00 00 00 00 00 00 00 00 00 -- 029730
00 00 00 00 00 00 00 00 00 00 00 00 00 00 00 00 -- 029740
00 00 00 00 00 00 00 00 00 00 00 00 00 00 00 00 -- 029750

00 00 00 00 00 00 00 00 00 00 00 00 00 00 00 00 -- 029760
00 00 00 00 00 00 00 00 00 00 00 00 00 00 00 00 -- 029770
00 00 00 00 00 00 00 00 00 00 00 00 00 00 00 00 -- 029780
```

```
00 00 00 00 00 00 00 00 00 00 00 00 00 00 00 00 -- 029790
00 00 00 00 00 00 00 00 00 00 00 00 00 00 00 00 -- 0297A0
00 00 00 00 00 00 00 00 00 00 00 00 00 00 00 00 -- 0297B0
00 00 00 00 00 00 00 00 00 00 00 00 00 00 00 00 -- 0297C0
00 00 00 00 00 00 00 00 00 00 00 00 00 00 00 00 -- 0297D0
00 00 00 00 00 00 00 00 00 00 00 00 00 00 00 00 -- 0297E0
00 00 00 00 00 00 00 00 00 00 00 00 00 00 00 00 -- 0297F0
00 00 00 00 00 00 00 00 00 00 00 00 00 00 01 FE -- 029800
00 00 00 00 00 00 00 00 00 00 00 00 00 00 00 00 -- 029810
00 00 00 00 00 00 00 00 00 00 00 00 00 00 00 00 -- 029820
00 00 00 00 00 00 00 00 00 00 00 00 00 00 00 00 -- 029830
00 00 00 00 00 00 00 00 00 00 00 00 00 00 00 00 -- 029840
00 00 00 00 00 00 00 00 00 00 00 00 00 00 00 00 -- 029850
00 00 00 00 00 00 00 00 00 00 00 00 00 00 00 00 -- 029860
00 00 00 00 00 00 00 00 00 00 00 00 00 00 00 00 -- 029870
00 00 00 00 00 00 00 00 00 00 00 00 00 00 00 00 -- 029880
00 00 00 00 00 00 00 00 00 00 00 00 00 00 00 00 -- 029890
00 00 00 00 00 00 00 00 00 00 00 00 00 00 00 00 -- 0298A0
00 00 00 00 00 00 00 00 00 00 00 00 00 00 00 00 -- 0298B0
00 00 00 00 00 00 00 00 00 00 00 00 00 00 00 00 -- 0298C0
00 00 00 00 00 00 00 00 00 00 00 00 00 00 00 00 -- 0298D0
00 00 00 00 00 00 00 00 00 00 00 00 00 00 00 00 -- 0298E0
00 00 00 00 00 00 00 00 00 00 00 00 00 00 00 00 -- 0298F0
00 00 00 00 00 00 00 00 00 00 00 00 00 00 00 00 -- 029900
00 00 00 00 00 00 00 00 00 00 00 00 00 00 00 00 -- 029910
00 00 00 00 00 00 00 00 00 00 00 00 00 00 00 00 -- 029920
00 00 00 00 00 00 00 00 00 00 00 00 00 00 00 00 -- 029930
00 00 00 00 00 00 00 00 00 00 00 00 00 00 00 00 -- 029940
00 00 00 00 00 00 00 00 00 00 00 00 00 00 00 00 -- 029950
00 00 00 00 00 00 00 00 00 00 00 00 00 00 00 00 -- 029960
00 00 00 00 00 00 00 00 00 00 00 00 00 00 00 00 -- 029970
00 00 00 00 00 00 00 00 00 00 00 00 00 00 00 00 -- 029980
00 00 00 00 00 00 00 00 00 00 00 00 00 00 00 00 -- 029990
00 00 00 00 00 00 00 00 00 00 00 00 00 00 00 00 -- 0299A0
00 00 00 00 00 00 00 00 00 00 00 00 00 00 00 00 -- 0299B0
00 00 00 00 00 00 00 00 00 00 00 00 00 00 00 00 -- 0299C0
00 00 00 00 00 00 00 00 00 00 00 00 00 00 00 00 -- 0299D0
00 00 00 00 00 00 00 00 00 00 00 00 00 00 00 00 -- 0299E0
00 00 00 00 00 00 00 00 00 00 00 00 00 00 00 00 -- 0299F0
00 00 00 00 00 00 00 00 00 00 00 00 00 00 01 FE -- 029A00
00 00 00 00 00 00 00 00 00 00 00 00 00 00 00 00 -- 029A10
00 00 00 00 00 00 00 00 00 00 00 00 00 00 00 00 -- 029A20
00 00 00 00 00 00 00 00 00 00 00 00 00 00 00 00 -- 029A30
00 00 00 00 00 00 00 00 00 00 00 00 00 00 00 00 -- 029A40
00 00 00 00 00 00 00 00 00 00 00 00 00 00 00 00 -- 029A50
00 00 00 00 00 00 00 00 00 00 00 00 00 00 00 00 -- 029A60
00 00 00 00 00 00 00 00 00 00 00 00 00 00 00 00 -- 029A70
00 00 00 00 00 00 00 00 00 00 00 00 00 00 00 00 -- 029A80
00 00 00 00 00 00 00 00 00 00 00 00 00 00 00 00 -- 029A90
00 00 00 00 00 00 00 00 00 00 00 00 00 00 00 00 -- 029AA0
00 00 00 00 00 00 00 00 00 00 00 00 00 00 00 00 -- 029AB0
00 00 00 00 00 00 00 00 00 00 00 00 00 00 00 00 -- 029AC0
00 00 00 00 00 00 00 00 00 00 00 00 00 00 00 00 -- 029AD0
00 00 00 00 00 00 00 00 00 00 00 00 00 00 00 00 -- 029AE0
00 00 00 00 00 00 00 00 00 00 00 00 00 00 00 00 -- 029AF0

00 00 00 00 00 00 00 00 00 00 00 00 00 00 00 00 -- 029B00
00 00 00 00 00 00 00 00 00 00 00 00 00 00 00 00 -- 029B10
00 00 00 00 00 00 00 00 00 00 00 00 00 00 00 00 -- 029B20
00 00 00 00 00 00 00 00 00 00 00 00 00 00 00 00 -- 029B30
```

```
00 00 00 00 00 00 00 00 00 00 00 00 00 00 00 00 -- 029B40
00 00 00 00 00 00 00 00 00 00 00 00 00 00 00 00 -- 029B50
00 00 00 00 00 00 00 00 00 00 00 00 00 00 00 00 -- 029B60
00 00 00 00 00 00 00 00 00 00 00 00 00 00 00 00 -- 029B70
00 00 00 00 00 00 00 00 00 00 00 00 00 00 00 00 -- 029B80
00 00 00 00 00 00 00 00 00 00 00 00 00 00 00 00 -- 029B90
00 00 00 00 00 00 00 00 00 00 00 00 00 00 00 00 -- 029BA0
00 00 00 00 00 00 00 00 00 00 00 00 00 00 00 00 -- 029BB0
00 00 00 00 00 00 00 00 00 00 00 00 00 00 00 00 -- 029BC0
00 00 00 00 00 00 00 00 00 00 00 00 00 00 00 00 -- 029BD0
00 00 00 00 00 00 00 00 00 00 00 00 00 00 00 00 -- 029BE0
00 00 00 00 00 00 00 00 00 00 00 00 00 00 00 00 -- 029BF0
00 00 00 00 00 00 00 00 00 00 00 00 00 00 01 FE -- 029C00
00 00 00 00 00 00 00 00 00 00 00 00 00 00 00 00 -- 029C10
00 00 00 00 00 00 00 00 00 00 00 00 00 00 00 00 -- 029C20
00 00 00 00 00 00 00 00 00 00 00 00 00 00 00 00 -- 029C30
00 00 00 00 00 00 00 00 00 00 00 00 00 00 00 00 -- 029C40
00 00 00 00 00 00 00 00 00 00 00 00 00 00 00 00 -- 029C50
00 00 00 00 00 00 00 00 00 00 00 00 00 00 00 00 -- 029C60
00 00 00 00 00 00 00 00 00 00 00 00 00 00 00 00 -- 029C70
00 00 00 00 00 00 00 00 00 00 00 00 00 00 00 00 -- 029C80
00 00 00 00 00 00 00 00 00 00 00 00 00 00 00 00 -- 029C90
00 00 00 00 00 00 00 00 00 00 00 00 00 00 00 00 -- 029CA0
00 00 00 00 00 00 00 00 00 00 00 00 00 00 00 00 -- 029CB0
00 00 00 00 00 00 00 00 00 00 00 00 00 00 00 00 -- 029CC0
00 00 00 00 00 00 00 00 00 00 00 00 00 00 00 00 -- 029CD0
00 00 00 00 00 00 00 00 00 00 00 00 00 00 00 00 -- 029CE0
00 00 00 00 00 00 00 00 00 00 00 00 00 00 00 00 -- 029CF0
00 00 00 00 00 00 00 00 00 00 00 00 00 00 00 00 -- 029D00
00 00 00 00 00 00 00 00 00 00 00 00 00 00 00 00 -- 029D10
00 00 00 00 00 00 00 00 00 00 00 00 00 00 00 00 -- 029D20
00 00 00 00 00 00 00 00 00 00 00 00 00 00 00 00 -- 029D30
00 00 00 00 00 00 00 00 00 00 00 00 00 00 00 00 -- 029D40
00 00 00 00 00 00 00 00 00 00 00 00 00 00 00 00 -- 029D50
00 00 00 00 00 00 00 00 00 00 00 00 00 00 00 00 -- 029D60
00 00 00 00 00 00 00 00 00 00 00 00 00 00 00 00 -- 029D70
00 00 00 00 00 00 00 00 00 00 00 00 00 00 00 00 -- 029D80
00 00 00 00 00 00 00 00 00 00 00 00 00 00 00 00 -- 029D90
00 00 00 00 00 00 00 00 00 00 00 00 00 00 00 00 -- 029DA0
00 00 00 00 00 00 00 00 00 00 00 00 00 00 00 00 -- 029DB0
00 00 00 00 00 00 00 00 00 00 00 00 00 00 00 00 -- 029DC0
00 00 00 00 00 00 00 00 00 00 00 00 00 00 00 00 -- 029DD0
00 00 00 00 00 00 00 00 00 00 00 00 00 00 00 00 -- 029DE0
00 00 00 00 00 00 00 00 00 00 00 00 00 00 00 00 -- 029DF0
00 00 00 00 00 00 00 00 00 00 00 00 00 00 01 FE -- 029E00
00 00 00 00 00 00 00 00 00 00 00 00 00 00 00 00 -- 029E10
00 00 00 00 00 00 00 00 00 00 00 00 00 00 00 00 -- 029E20
00 00 00 00 00 00 00 00 00 00 00 00 00 00 00 00 -- 029E30
00 00 00 00 00 00 00 00 00 00 00 00 00 00 00 00 -- 029E40
00 00 00 00 00 00 00 00 00 00 00 00 00 00 00 00 -- 029E50
00 00 00 00 00 00 00 00 00 00 00 00 00 00 00 00 -- 029E60
00 00 00 00 00 00 00 00 00 00 00 00 00 00 00 00 -- 029E70
00 00 00 00 00 00 00 00 00 00 00 00 00 00 00 00 -- 029E80
00 00 00 00 00 00 00 00 00 00 00 00 00 00 00 00 -- 029E90

00 00 00 00 00 00 00 00 00 00 00 00 00 00 00 00 -- 029EA0
00 00 00 00 00 00 00 00 00 00 00 00 00 00 00 00 -- 029EB0
00 00 00 00 00 00 00 00 00 00 00 00 00 00 00 00 -- 029EC0
00 00 00 00 00 00 00 00 00 00 00 00 00 00 00 00 -- 029ED0
00 00 00 00 00 00 00 00 00 00 00 00 00 00 00 00 -- 029EE0
```

```
00  00  00  00  00  00  00  00  00  00  00  00  00  00  00  00  --  029EF0
00  00  00  00  00  00  00  00  00  00  00  00  00  00  00  00  --  029F00
00  00  00  00  00  00  00  00  00  00  00  00  00  00  00  00  --  029F10
00  00  00  00  00  00  00  00  00  00  00  00  00  00  00  00  --  029F20
00  00  00  00  00  00  00  00  00  00  00  00  00  00  00  00  --  029F30
00  00  00  00  00  00  00  00  00  00  00  00  00  00  00  00  --  029F40
00  00  00  00  00  00  00  00  00  00  00  00  00  00  00  00  --  029F50
00  00  00  00  00  00  00  00  00  00  00  00  00  00  00  00  --  029F60
00  00  00  00  00  00  00  00  00  00  00  00  00  00  00  00  --  029F70
00  00  00  00  00  00  00  00  00  00  00  00  00  00  00  00  --  029F80
00  00  00  00  00  00  00  00  00  00  00  00  00  00  00  00  --  029F90
00  00  00  00  00  00  00  00  00  00  00  00  00  00  00  00  --  029FA0
00  00  00  00  00  00  00  00  00  00  00  00  00  00  00  00  --  029FB0
00  00  00  00  00  00  00  00  00  00  00  00  00  00  00  00  --  029FC0
00  00  00  00  00  00  00  00  00  00  00  00  00  00  00  00  --  029FD0
00  00  00  00  00  00  00  00  00  00  00  00  00  00  00  00  --  029FE0
00  00  00  00  00  00  00  00  00  00  00  00  00  00  00  00  --  029FF0
00  00  00  00  00  00  00  00  00  00  00  00  00  00  01  FE  --  02A000
00  00  00  00  00  00  00  00  00  00  00  00  00  00  00  00  --  02A010
00  00  00  00  00  00  00  00  00  00  00  00  00  00  00  00  --  02A020
00  00  00  00  00  00  00  00  00  00  00  00  00  00  00  00  --  02A030
00  00  00  00  00  00  00  00  00  00  00  00  00  00  00  00  --  02A040
00  00  00  00  00  00  00  00  00  00  00  00  00  00  00  00  --  02A050
00  00  00  00  00  00  00  00  00  00  00  00  00  00  00  00  --  02A060
00  00  00  00  00  00  00  00  00  00  00  00  00  00  00  00  --  02A070
00  00  00  00  00  00  00  00  00  00  00  00  00  00  00  00  --  02A080
00  00  00  00  00  00  00  00  00  00  00  00  00  00  00  00  --  02A090
00  00  00  00  00  00  00  00  00  00  00  00  00  00  00  00  --  02A0A0
00  00  00  00  00  00  00  00  00  00  00  00  00  00  00  00  --  02A0B0
00  00  00  00  00  00  00  00  00  00  00  00  00  00  00  00  --  02A0C0
00  00  00  00  00  00  00  00  00  00  00  00  00  00  00  00  --  02A0D0
00  00  00  00  00  00  00  00  00  00  00  00  00  00  00  00  --  02A0E0
00  00  00  00  00  00  00  00  00  00  00  00  00  00  00  00  --  02A0F0
00  00  00  00  00  00  00  00  00  00  00  00  00  00  00  00  --  02A100
00  00  00  00  00  00  00  00  00  00  00  00  00  00  00  00  --  02A110
00  00  00  00  00  00  00  00  00  00  00  00  00  00  00  00  --  02A120
00  00  00  00  00  00  00  00  00  00  00  00  00  00  00  00  --  02A130
00  00  00  00  00  00  00  00  00  00  00  00  00  00  00  00  --  02A140
00  00  00  00  00  00  00  00  00  00  00  00  00  00  00  00  --  02A150
00  00  00  00  00  00  00  00  00  00  00  00  00  00  00  00  --  02A160
00  00  00  00  00  00  00  00  00  00  00  00  00  00  00  00  --  02A170
00  00  00  00  00  00  00  00  00  00  00  00  00  00  00  00  --  02A180
00  00  00  00  00  00  00  00  00  00  00  00  00  00  00  00  --  02A190
00  00  00  00  00  00  00  00  00  00  00  00  00  00  00  00  --  02A1A0
00  00  00  00  00  00  00  00  00  00  00  00  00  00  00  00  --  02A1B0
00  00  00  00  00  00  00  00  00  00  00  00  00  00  00  00  --  02A1C0
00  00  00  00  00  00  00  00  00  00  00  00  00  00  00  00  --  02A1D0
00  00  00  00  00  00  00  00  00  00  00  00  00  00  00  00  --  02A1E0
00  00  00  00  00  00  00  00  00  00  00  00  00  00  00  00  --  02A1F0
00  00  00  00  00  00  00  00  00  00  00  00  00  00  01  FE  --  02A200
00  00  00  00  00  00  00  00  00  00  00  00  00  00  00  00  --  02A210
00  00  00  00  00  00  00  00  00  00  00  00  00  00  00  00  --  02A220
00  00  00  00  00  00  00  00  00  00  00  00  00  00  00  00  --  02A230

00  00  00  00  00  00  00  00  00  00  00  00  00  00  00  00  --  02A240
00  00  00  00  00  00  00  00  00  00  00  00  00  00  00  00  --  02A250
00  00  00  00  00  00  00  00  00  00  00  00  00  00  00  00  --  02A260
00  00  00  00  00  00  00  00  00  00  00  00  00  00  00  00  --  02A270
00  00  00  00  00  00  00  00  00  00  00  00  00  00  00  00  --  02A280
00  00  00  00  00  00  00  00  00  00  00  00  00  00  00  00  --  02A290
```

193

```
00 00 00 00 00 00 00 00 00 00 00 00 00 00 00 00 -- 02A2A0
00 00 00 00 00 00 00 00 00 00 00 00 00 00 00 00 -- 02A2B0
00 00 00 00 00 00 00 00 00 00 00 00 00 00 00 00 -- 02A2C0
00 00 00 00 00 00 00 00 00 00 00 00 00 00 00 00 -- 02A2D0
00 00 00 00 00 00 00 00 00 00 00 00 00 00 00 00 -- 02A2E0
00 00 00 00 00 00 00 00 00 00 00 00 00 00 00 00 -- 02A2F0
00 00 00 00 00 00 00 00 00 00 00 00 00 00 00 00 -- 02A300
00 00 00 00 00 00 00 00 00 00 00 00 00 00 00 00 -- 02A310
00 00 00 00 00 00 00 00 00 00 00 00 00 00 00 00 -- 02A320
00 00 00 00 00 00 00 00 00 00 00 00 00 00 00 00 -- 02A330
00 00 00 00 00 00 00 00 00 00 00 00 00 00 00 00 -- 02A340
00 00 00 00 00 00 00 00 00 00 00 00 00 00 00 00 -- 02A350
00 00 00 00 00 00 00 00 00 00 00 00 00 00 00 00 -- 02A360
00 00 00 00 00 00 00 00 00 00 00 00 00 00 00 00 -- 02A370
00 00 00 00 00 00 00 00 00 00 00 00 00 00 00 00 -- 02A380
00 00 00 00 00 00 00 00 00 00 00 00 00 00 00 00 -- 02A390
00 00 00 00 00 00 00 00 00 00 00 00 00 00 00 00 -- 02A3A0
00 00 00 00 00 00 00 00 00 00 00 00 00 00 00 00 -- 02A3B0
00 00 00 00 00 00 00 00 00 00 00 00 00 00 00 00 -- 02A3C0
00 00 00 00 00 00 00 00 00 00 00 00 00 00 00 00 -- 02A3D0
00 00 00 00 00 00 00 00 00 00 00 00 00 00 00 00 -- 02A3E0
00 00 00 00 00 00 00 00 00 00 00 00 00 00 00 00 -- 02A3F0
00 00 00 00 00 00 00 00 00 00 00 00 00 00 01 FE -- 02A400
00 00 00 00 00 00 00 00 00 00 00 00 00 00 00 00 -- 02A410
00 00 00 00 00 00 00 00 00 00 00 00 00 00 00 00 -- 02A420
00 00 00 00 00 00 00 00 00 00 00 00 00 00 00 00 -- 02A430
00 00 00 00 00 00 00 00 00 00 00 00 00 00 00 00 -- 02A440
00 00 00 00 00 00 00 00 00 00 00 00 00 00 00 00 -- 02A450
00 00 00 00 00 00 00 00 00 00 00 00 00 00 00 00 -- 02A460
00 00 00 00 00 00 00 00 00 00 00 00 00 00 00 00 -- 02A470
00 00 00 00 00 00 00 00 00 00 00 00 00 00 00 00 -- 02A480
00 00 00 00 00 00 00 00 00 00 00 00 00 00 00 00 -- 02A490
00 00 00 00 00 00 00 00 00 00 00 00 00 00 00 00 -- 02A4A0
00 00 00 00 00 00 00 00 00 00 00 00 00 00 00 00 -- 02A4B0
00 00 00 00 00 00 00 00 00 00 00 00 00 00 00 00 -- 02A4C0
00 00 00 00 00 00 00 00 00 00 00 00 00 00 00 00 -- 02A4D0
00 00 00 00 00 00 00 00 00 00 00 00 00 00 00 00 -- 02A4E0
00 00 00 00 00 00 00 00 00 00 00 00 00 00 00 00 -- 02A4F0
00 00 00 00 00 00 00 00 00 00 00 00 00 00 00 00 -- 02A500
00 00 00 00 00 00 00 00 00 00 00 00 00 00 00 00 -- 02A510
00 00 00 00 00 00 00 00 00 00 00 00 00 00 00 00 -- 02A520
00 00 00 00 00 00 00 00 00 00 00 00 00 00 00 00 -- 02A530
00 00 00 00 00 00 00 00 00 00 00 00 00 00 00 00 -- 02A540
00 00 00 00 00 00 00 00 00 00 00 00 00 00 00 00 -- 02A550
00 00 00 00 00 00 00 00 00 00 00 00 00 00 00 00 -- 02A560
00 00 00 00 00 00 00 00 00 00 00 00 00 00 00 00 -- 02A570
00 00 00 00 00 00 00 00 00 00 00 00 00 00 00 00 -- 02A580
00 00 00 00 00 00 00 00 00 00 00 00 00 00 00 00 -- 02A590
00 00 00 00 00 00 00 00 00 00 00 00 00 00 00 00 -- 02A5A0
00 00 00 00 00 00 00 00 00 00 00 00 00 00 00 00 -- 02A5B0
00 00 00 00 00 00 00 00 00 00 00 00 00 00 00 00 -- 02A5C0
00 00 00 00 00 00 00 00 00 00 00 00 00 00 00 00 -- 02A5D0

00 00 00 00 00 00 00 00 00 00 00 00 00 00 00 00 -- 02A5E0
00 00 00 00 00 00 00 00 00 00 00 00 00 00 00 00 -- 02A5F0
00 00 00 00 00 00 00 00 00 00 00 00 00 00 01 FE -- 02A600
00 00 00 00 00 00 00 00 00 00 00 00 00 00 00 00 -- 02A610
00 00 00 00 00 00 00 00 00 00 00 00 00 00 00 00 -- 02A620
00 00 00 00 00 00 00 00 00 00 00 00 00 00 00 00 -- 02A630
00 00 00 00 00 00 00 00 00 00 00 00 00 00 00 00 -- 02A640
```

```
00 00 00 00 00 00 00 00 00 00 00 00 00 00 00 00 -- 02A650
00 00 00 00 00 00 00 00 00 00 00 00 00 00 00 00 -- 02A660
00 00 00 00 00 00 00 00 00 00 00 00 00 00 00 00 -- 02A670
00 00 00 00 00 00 00 00 00 00 00 00 00 00 00 00 -- 02A680
00 00 00 00 00 00 00 00 00 00 00 00 00 00 00 00 -- 02A690
00 00 00 00 00 00 00 00 00 00 00 00 00 00 00 00 -- 02A6A0
00 00 00 00 00 00 00 00 00 00 00 00 00 00 00 00 -- 02A6B0
00 00 00 00 00 00 00 00 00 00 00 00 00 00 00 00 -- 02A6C0
00 00 00 00 00 00 00 00 00 00 00 00 00 00 00 00 -- 02A6D0
00 00 00 00 00 00 00 00 00 00 00 00 00 00 00 00 -- 02A6E0
00 00 00 00 00 00 00 00 00 00 00 00 00 00 00 00 -- 02A6F0
00 00 00 00 00 00 00 00 00 00 00 00 00 00 00 00 -- 02A700
00 00 00 00 00 00 00 00 00 00 00 00 00 00 00 00 -- 02A710
00 00 00 00 00 00 00 00 00 00 00 00 00 00 00 00 -- 02A720
00 00 00 00 00 00 00 00 00 00 00 00 00 00 00 00 -- 02A730
00 00 00 00 00 00 00 00 00 00 00 00 00 00 00 00 -- 02A740
00 00 00 00 00 00 00 00 00 00 00 00 00 00 00 00 -- 02A750
00 00 00 00 00 00 00 00 00 00 00 00 00 00 00 00 -- 02A760
00 00 00 00 00 00 00 00 00 00 00 00 00 00 00 00 -- 02A770
00 00 00 00 00 00 00 00 00 00 00 00 00 00 00 00 -- 02A780
00 00 00 00 00 00 00 00 00 00 00 00 00 00 00 00 -- 02A790
00 00 00 00 00 00 00 00 00 00 00 00 00 00 00 00 -- 02A7A0
00 00 00 00 00 00 00 00 00 00 00 00 00 00 00 00 -- 02A7B0
00 00 00 00 00 00 00 00 00 00 00 00 00 00 00 00 -- 02A7C0
00 00 00 00 00 00 00 00 00 00 00 00 00 00 00 00 -- 02A7D0
00 00 00 00 00 00 00 00 00 00 00 00 00 00 00 00 -- 02A7E0
00 00 00 00 00 00 00 00 00 00 00 00 00 00 00 00 -- 02A7F0
00 00 00 00 00 00 00 00 00 00 00 00 00 00 01 FE -- 02A800
00 00 00 00 00 00 00 00 00 00 00 00 00 00 00 00 -- 02A810
00 00 00 00 00 00 00 00 00 00 00 00 00 00 00 00 -- 02A820
00 00 00 00 00 00 00 00 00 00 00 00 00 00 00 00 -- 02A830
00 00 00 00 00 00 00 00 00 00 00 00 00 00 00 00 -- 02A840
00 00 00 00 00 00 00 00 00 00 00 00 00 00 00 00 -- 02A850
00 00 00 00 00 00 00 00 00 00 00 00 00 00 00 00 -- 02A860
00 00 00 00 00 00 00 00 00 00 00 00 00 00 00 00 -- 02A870
00 00 00 00 00 00 00 00 00 00 00 00 00 00 00 00 -- 02A880
00 00 00 00 00 00 00 00 00 00 00 00 00 00 00 00 -- 02A890
00 00 00 00 00 00 00 00 00 00 00 00 00 00 00 00 -- 02A8A0
00 00 00 00 00 00 00 00 00 00 00 00 00 00 00 00 -- 02A8B0
00 00 00 00 00 00 00 00 00 00 00 00 00 00 00 00 -- 02A8C0
00 00 00 00 00 00 00 00 00 00 00 00 00 00 00 00 -- 02A8D0
00 00 00 00 00 00 00 00 00 00 00 00 00 00 00 00 -- 02A8E0
00 00 00 00 00 00 00 00 00 00 00 00 00 00 00 00 -- 02A8F0
00 00 00 00 00 00 00 00 00 00 00 00 00 00 00 00 -- 02A900
00 00 00 00 00 00 00 00 00 00 00 00 00 00 00 00 -- 02A910
00 00 00 00 00 00 00 00 00 00 00 00 00 00 00 00 -- 02A920
00 00 00 00 00 00 00 00 00 00 00 00 00 00 00 00 -- 02A930
00 00 00 00 00 00 00 00 00 00 00 00 00 00 00 00 -- 02A940
00 00 00 00 00 00 00 00 00 00 00 00 00 00 00 00 -- 02A950
00 00 00 00 00 00 00 00 00 00 00 00 00 00 00 00 -- 02A960
00 00 00 00 00 00 00 00 00 00 00 00 00 00 00 00 -- 02A970

00 00 00 00 00 00 00 00 00 00 00 00 00 00 00 00 -- 02A980
00 00 00 00 00 00 00 00 00 00 00 00 00 00 00 00 -- 02A990
00 00 00 00 00 00 00 00 00 00 00 00 00 00 00 00 -- 02A9A0
00 00 00 00 00 00 00 00 00 00 00 00 00 00 00 00 -- 02A9B0
00 00 00 00 00 00 00 00 00 00 00 00 00 00 00 00 -- 02A9C0
00 00 00 00 00 00 00 00 00 00 00 00 00 00 00 00 -- 02A9D0
00 00 00 00 00 00 00 00 00 00 00 00 00 00 00 00 -- 02A9E0
00 00 00 00 00 00 00 00 00 00 00 00 00 00 00 00 -- 02A9F0
```

```
00 00 00 00 00 00 00 00 00 00 00 00 00 00 01 FE -- 02AA00
00 00 00 00 00 00 00 00 00 00 00 00 00 00 00 00 -- 02AA10
00 00 00 00 00 00 00 00 00 00 00 00 00 00 00 00 -- 02AA20
00 00 00 00 00 00 00 00 00 00 00 00 00 00 00 00 -- 02AA30
00 00 00 00 00 00 00 00 00 00 00 00 00 00 00 00 -- 02AA40
00 00 00 00 00 00 00 00 00 00 00 00 00 00 00 00 -- 02AA50
00 00 00 00 00 00 00 00 00 00 00 00 00 00 00 00 -- 02AA60
00 00 00 00 00 00 00 00 00 00 00 00 00 00 00 00 -- 02AA70
00 00 00 00 00 00 00 00 00 00 00 00 00 00 00 00 -- 02AA80
00 00 00 00 00 00 00 00 00 00 00 00 00 00 00 00 -- 02AA90
00 00 00 00 00 00 00 00 00 00 00 00 00 00 00 00 -- 02AAA0
00 00 00 00 00 00 00 00 00 00 00 00 00 00 00 00 -- 02AAB0
00 00 00 00 00 00 00 00 00 00 00 00 00 00 00 00 -- 02AAC0
00 00 00 00 00 00 00 00 00 00 00 00 00 00 00 00 -- 02AAD0
00 00 00 00 00 00 00 00 00 00 00 00 00 00 00 00 -- 02AAE0
00 00 00 00 00 00 00 00 00 00 00 00 00 00 00 00 -- 02AAF0
00 00 00 00 00 00 00 00 00 00 00 00 00 00 00 00 -- 02AB00
00 00 00 00 00 00 00 00 00 00 00 00 00 00 00 00 -- 02AB10
00 00 00 00 00 00 00 00 00 00 00 00 00 00 00 00 -- 02AB20
00 00 00 00 00 00 00 00 00 00 00 00 00 00 00 00 -- 02AB30
00 00 00 00 00 00 00 00 00 00 00 00 00 00 00 00 -- 02AB40
00 00 00 00 00 00 00 00 00 00 00 00 00 00 00 00 -- 02AB50
00 00 00 00 00 00 00 00 00 00 00 00 00 00 00 00 -- 02AB60
00 00 00 00 00 00 00 00 00 00 00 00 00 00 00 00 -- 02AB70
00 00 00 00 00 00 00 00 00 00 00 00 00 00 00 00 -- 02AB80
00 00 00 00 00 00 00 00 00 00 00 00 00 00 00 00 -- 02AB90
00 00 00 00 00 00 00 00 00 00 00 00 00 00 00 00 -- 02ABA0
00 00 00 00 00 00 00 00 00 00 00 00 00 00 00 00 -- 02ABB0
00 00 00 00 00 00 00 00 00 00 00 00 00 00 00 00 -- 02ABC0
00 00 00 00 00 00 00 00 00 00 00 00 00 00 00 00 -- 02ABD0
00 00 00 00 00 00 00 00 00 00 00 00 00 00 00 00 -- 02ABE0
00 00 00 00 00 00 00 00 00 00 00 00 00 00 00 00 -- 02ABF0
00 00 00 00 00 00 00 00 00 00 00 00 00 00 01 FE -- 02AC00
00 00 00 00 00 00 00 00 00 00 00 00 00 00 00 00 -- 02AC10
00 00 00 00 00 00 00 00 00 00 00 00 00 00 00 00 -- 02AC20
00 00 00 00 00 00 00 00 00 00 00 00 00 00 00 00 -- 02AC30
00 00 00 00 00 00 00 00 00 00 00 00 00 00 00 00 -- 02AC40
00 00 00 00 00 00 00 00 00 00 00 00 00 00 00 00 -- 02AC50
00 00 00 00 00 00 00 00 00 00 00 00 00 00 00 00 -- 02AC60
00 00 00 00 00 00 00 00 00 00 00 00 00 00 00 00 -- 02AC70
00 00 00 00 00 00 00 00 00 00 00 00 00 00 00 00 -- 02AC80
00 00 00 00 00 00 00 00 00 00 00 00 00 00 00 00 -- 02AC90
00 00 00 00 00 00 00 00 00 00 00 00 00 00 00 00 -- 02ACA0
00 00 00 00 00 00 00 00 00 00 00 00 00 00 00 00 -- 02ACB0
00 00 00 00 00 00 00 00 00 00 00 00 00 00 00 00 -- 02ACC0
00 00 00 00 00 00 00 00 00 00 00 00 00 00 00 00 -- 02ACD0
00 00 00 00 00 00 00 00 00 00 00 00 00 00 00 00 -- 02ACE0
00 00 00 00 00 00 00 00 00 00 00 00 00 00 00 00 -- 02ACF0
00 00 00 00 00 00 00 00 00 00 00 00 00 00 00 00 -- 02AD00
00 00 00 00 00 00 00 00 00 00 00 00 00 00 00 00 -- 02AD10

00 00 00 00 00 00 00 00 00 00 00 00 00 00 00 00 -- 02AD20
00 00 00 00 00 00 00 00 00 00 00 00 00 00 00 00 -- 02AD30
00 00 00 00 00 00 00 00 00 00 00 00 00 00 00 00 -- 02AD40
00 00 00 00 00 00 00 00 00 00 00 00 00 00 00 00 -- 02AD50
00 00 00 00 00 00 00 00 00 00 00 00 00 00 00 00 -- 02AD60
00 00 00 00 00 00 00 00 00 00 00 00 00 00 00 00 -- 02AD70
00 00 00 00 00 00 00 00 00 00 00 00 00 00 00 00 -- 02AD80
00 00 00 00 00 00 00 00 00 00 00 00 00 00 00 00 -- 02AD90
00 00 00 00 00 00 00 00 00 00 00 00 00 00 00 00 -- 02ADA0
```

```
00 00 00 00 00 00 00 00 00 00 00 00 00 00 00 00 -- 02ADB0
00 00 00 00 00 00 00 00 00 00 00 00 00 00 00 00 -- 02ADC0
00 00 00 00 00 00 00 00 00 00 00 00 00 00 00 00 -- 02ADD0
00 00 00 00 00 00 00 00 00 00 00 00 00 00 00 00 -- 02ADE0
00 00 00 00 00 00 00 00 00 00 00 00 00 00 00 00 -- 02ADF0
00 00 00 00 00 00 00 00 00 00 00 00 00 00 01 FE -- 02AE00
00 00 00 00 00 00 00 00 00 00 00 00 00 00 00 00 -- 02AE10
00 00 00 00 00 00 00 00 00 00 00 00 00 00 00 00 -- 02AE20
00 00 00 00 00 00 00 00 00 00 00 00 00 00 00 00 -- 02AE30
00 00 00 00 00 00 00 00 00 00 00 00 00 00 00 00 -- 02AE40
00 00 00 00 00 00 00 00 00 00 00 00 00 00 00 00 -- 02AE50
00 00 00 00 00 00 00 00 00 00 00 00 00 00 00 00 -- 02AE60
00 00 00 00 00 00 00 00 00 00 00 00 00 00 00 00 -- 02AE70
00 00 00 00 00 00 00 00 00 00 00 00 00 00 00 00 -- 02AE80
00 00 00 00 00 00 00 00 00 00 00 00 00 00 00 00 -- 02AE90
00 00 00 00 00 00 00 00 00 00 00 00 00 00 00 00 -- 02AEA0
00 00 00 00 00 00 00 00 00 00 00 00 00 00 00 00 -- 02AEB0
00 00 00 00 00 00 00 00 00 00 00 00 00 00 00 00 -- 02AEC0
00 00 00 00 00 00 00 00 00 00 00 00 00 00 00 00 -- 02AED0
00 00 00 00 00 00 00 00 00 00 00 00 00 00 00 00 -- 02AEE0
00 00 00 00 00 00 00 00 00 00 00 00 00 00 00 00 -- 02AEF0
00 00 00 00 00 00 00 00 00 00 00 00 00 00 00 00 -- 02AF00
00 00 00 00 00 00 00 00 00 00 00 00 00 00 00 00 -- 02AF10
00 00 00 00 00 00 00 00 00 00 00 00 00 00 00 00 -- 02AF20
00 00 00 00 00 00 00 00 00 00 00 00 00 00 00 00 -- 02AF30
00 00 00 00 00 00 00 00 00 00 00 00 00 00 00 00 -- 02AF40
00 00 00 00 00 00 00 00 00 00 00 00 00 00 00 00 -- 02AF50
00 00 00 00 00 00 00 00 00 00 00 00 00 00 00 00 -- 02AF60
00 00 00 00 00 00 00 00 00 00 00 00 00 00 00 00 -- 02AF70
00 00 00 00 00 00 00 00 00 00 00 00 00 00 00 00 -- 02AF80
00 00 00 00 00 00 00 00 00 00 00 00 00 00 00 00 -- 02AF90
00 00 00 00 00 00 00 00 00 00 00 00 00 00 00 00 -- 02AFA0
00 00 00 00 00 00 00 00 00 00 00 00 00 00 00 00 -- 02AFB0
00 00 00 00 00 00 00 00 00 00 00 00 00 00 00 00 -- 02AFC0
00 00 00 00 00 00 00 00 00 00 00 00 00 00 00 00 -- 02AFD0
00 00 00 00 00 00 00 00 00 00 00 00 00 00 00 00 -- 02AFE0
00 00 00 00 00 00 00 00 00 00 00 00 00 00 00 00 -- 02AFF0
00 00 00 00 00 00 00 00 00 00 00 00 00 00 01 FE -- 02B000
00 00 00 00 00 00 00 00 00 00 00 00 00 00 00 00 -- 02B010
00 00 00 00 00 00 00 00 00 00 00 00 00 00 00 00 -- 02B020
00 00 00 00 00 00 00 00 00 00 00 00 00 00 00 00 -- 02B030
00 00 00 00 00 00 00 00 00 00 00 00 00 00 00 00 -- 02B040
00 00 00 00 00 00 00 00 00 00 00 00 00 00 00 00 -- 02B050
00 00 00 00 00 00 00 00 00 00 00 00 00 00 00 00 -- 02B060
00 00 00 00 00 00 00 00 00 00 00 00 00 00 00 00 -- 02B070
00 00 00 00 00 00 00 00 00 00 00 00 00 00 00 00 -- 02B080
00 00 00 00 00 00 00 00 00 00 00 00 00 00 00 00 -- 02B090
00 00 00 00 00 00 00 00 00 00 00 00 00 00 00 00 -- 02B0A0
00 00 00 00 00 00 00 00 00 00 00 00 00 00 00 00 -- 02B0B0
00 00 00 00 00 00 00 00 00 00 00 00 00 00 00 00 -- 02B0C0
00 00 00 00 00 00 00 00 00 00 00 00 00 00 00 00 -- 02B0D0
00 00 00 00 00 00 00 00 00 00 00 00 00 00 00 00 -- 02B0E0
00 00 00 00 00 00 00 00 00 00 00 00 00 00 00 00 -- 02B0F0
00 00 00 00 00 00 00 00 00 00 00 00 00 00 00 00 -- 02B100
00 00 00 00 00 00 00 00 00 00 00 00 00 00 00 00 -- 02B110
00 00 00 00 00 00 00 00 00 00 00 00 00 00 00 00 -- 02B120
00 00 00 00 00 00 00 00 00 00 00 00 00 00 00 00 -- 02B130
00 00 00 00 00 00 00 00 00 00 00 00 00 00 00 00 -- 02B140
00 00 00 00 00 00 00 00 00 00 00 00 00 00 00 00 -- 02B150
```

```
00 00 00 00 00 00 00 00 00 00 00 00 00 00 00 00 -- 02B160
00 00 00 00 00 00 00 00 00 00 00 00 00 00 00 00 -- 02B170
00 00 00 00 00 00 00 00 00 00 00 00 00 00 00 00 -- 02B180
00 00 00 00 00 00 00 00 00 00 00 00 00 00 00 00 -- 02B190
00 00 00 00 00 00 00 00 00 00 00 00 00 00 00 00 -- 02B1A0
00 00 00 00 00 00 00 00 00 00 00 00 00 00 00 00 -- 02B1B0
00 00 00 00 00 00 00 00 00 00 00 00 00 00 00 00 -- 02B1C0
00 00 00 00 00 00 00 00 00 00 00 00 00 00 00 00 -- 02B1D0
00 00 00 00 00 00 00 00 00 00 00 00 00 00 00 00 -- 02B1E0
00 00 00 00 00 00 00 00 00 00 00 00 00 00 00 00 -- 02B1F0
00 00 00 00 00 00 00 00 00 00 00 00 00 00 01 FE -- 02B200
00 00 00 00 00 00 00 00 00 00 00 00 00 00 00 00 -- 02B210
00 00 00 00 00 00 00 00 00 00 00 00 00 00 00 00 -- 02B220
00 00 00 00 00 00 00 00 00 00 00 00 00 00 00 00 -- 02B230
00 00 00 00 00 00 00 00 00 00 00 00 00 00 00 00 -- 02B240
00 00 00 00 00 00 00 00 00 00 00 00 00 00 00 00 -- 02B250
00 00 00 00 00 00 00 00 00 00 00 00 00 00 00 00 -- 02B260
00 00 00 00 00 00 00 00 00 00 00 00 00 00 00 00 -- 02B270
00 00 00 00 00 00 00 00 00 00 00 00 00 00 00 00 -- 02B280
00 00 00 00 00 00 00 00 00 00 00 00 00 00 00 00 -- 02B290
00 00 00 00 00 00 00 00 00 00 00 00 00 00 00 00 -- 02B2A0
00 00 00 00 00 00 00 00 00 00 00 00 00 00 00 00 -- 02B2B0
00 00 00 00 00 00 00 00 00 00 00 00 00 00 00 00 -- 02B2C0
00 00 00 00 00 00 00 00 00 00 00 00 00 00 00 00 -- 02B2D0
00 00 00 00 00 00 00 00 00 00 00 00 00 00 00 00 -- 02B2E0
00 00 00 00 00 00 00 00 00 00 00 00 00 00 00 00 -- 02B2F0
00 00 00 00 00 00 00 00 00 00 00 00 00 00 00 00 -- 02B300
00 00 00 00 00 00 00 00 00 00 00 00 00 00 00 00 -- 02B310
00 00 00 00 00 00 00 00 00 00 00 00 00 00 00 00 -- 02B320
00 00 00 00 00 00 00 00 00 00 00 00 00 00 00 00 -- 02B330
00 00 00 00 00 00 00 00 00 00 00 00 00 00 00 00 -- 02B340
00 00 00 00 00 00 00 00 00 00 00 00 00 00 00 00 -- 02B350
00 00 00 00 00 00 00 00 00 00 00 00 00 00 00 00 -- 02B360
00 00 00 00 00 00 00 00 00 00 00 00 00 00 00 00 -- 02B370
00 00 00 00 00 00 00 00 00 00 00 00 00 00 00 00 -- 02B380
00 00 00 00 00 00 00 00 00 00 00 00 00 00 00 00 -- 02B390
00 00 00 00 00 00 00 00 00 00 00 00 00 00 00 00 -- 02B3A0
00 00 00 00 00 00 00 00 00 00 00 00 00 00 00 00 -- 02B3B0
00 00 00 00 00 00 00 00 00 00 00 00 00 00 00 00 -- 02B3C0
00 00 00 00 00 00 00 00 00 00 00 00 00 00 00 00 -- 02B3D0
00 00 00 00 00 00 00 00 00 00 00 00 00 00 00 00 -- 02B3E0
00 00 00 00 00 00 00 00 00 00 00 00 00 00 00 00 -- 02B3F0
00 00 00 00 00 00 00 00 00 00 00 00 00 00 01 FE -- 02B400
00 00 00 00 00 00 00 00 00 00 00 00 00 00 00 00 -- 02B410
00 00 00 00 00 00 00 00 00 00 00 00 00 00 00 00 -- 02B420
00 00 00 00 00 00 00 00 00 00 00 00 00 00 00 00 -- 02B430
00 00 00 00 00 00 00 00 00 00 00 00 00 00 00 00 -- 02B440
00 00 00 00 00 00 00 00 00 00 00 00 00 00 00 00 -- 02B450

00 00 00 00 00 00 00 00 00 00 00 00 00 00 00 00 -- 02B460
00 00 00 00 00 00 00 00 00 00 00 00 00 00 00 00 -- 02B470
00 00 00 00 00 00 00 00 00 00 00 00 00 00 00 00 -- 02B480
00 00 00 00 00 00 00 00 00 00 00 00 00 00 00 00 -- 02B490
00 00 00 00 00 00 00 00 00 00 00 00 00 00 00 00 -- 02B4A0
00 00 00 00 00 00 00 00 00 00 00 00 00 00 00 00 -- 02B4B0
00 00 00 00 00 00 00 00 00 00 00 00 00 00 00 00 -- 02B4C0
00 00 00 00 00 00 00 00 00 00 00 00 00 00 00 00 -- 02B4D0
00 00 00 00 00 00 00 00 00 00 00 00 00 00 00 00 -- 02B4E0
00 00 00 00 00 00 00 00 00 00 00 00 00 00 00 00 -- 02B4F0
00 00 00 00 00 00 00 00 00 00 00 00 00 00 00 00 -- 02B500
```

```
00 00 00 00 00 00 00 00 00 00 00 00 00 00 00 00 -- 02B510
00 00 00 00 00 00 00 00 00 00 00 00 00 00 00 00 -- 02B520
00 00 00 00 00 00 00 00 00 00 00 00 00 00 00 00 -- 02B530
00 00 00 00 00 00 00 00 00 00 00 00 00 00 00 00 -- 02B540
00 00 00 00 00 00 00 00 00 00 00 00 00 00 00 00 -- 02B550
00 00 00 00 00 00 00 00 00 00 00 00 00 00 00 00 -- 02B560
00 00 00 00 00 00 00 00 00 00 00 00 00 00 00 00 -- 02B570
00 00 00 00 00 00 00 00 00 00 00 00 00 00 00 00 -- 02B580
00 00 00 00 00 00 00 00 00 00 00 00 00 00 00 00 -- 02B590
00 00 00 00 00 00 00 00 00 00 00 00 00 00 00 00 -- 02B5A0
00 00 00 00 00 00 00 00 00 00 00 00 00 00 00 00 -- 02B5B0
00 00 00 00 00 00 00 00 00 00 00 00 00 00 00 00 -- 02B5C0
00 00 00 00 00 00 00 00 00 00 00 00 00 00 00 00 -- 02B5D0
00 00 00 00 00 00 00 00 00 00 00 00 00 00 00 00 -- 02B5E0
00 00 00 00 00 00 00 00 00 00 00 00 00 00 00 00 -- 02B5F0
00 00 00 00 00 00 00 00 00 00 00 00 00 00 01 FE -- 02B600
00 00 00 00 00 00 00 00 00 00 00 00 00 00 00 00 -- 02B610
00 00 00 00 00 00 00 00 00 00 00 00 00 00 00 00 -- 02B620
00 00 00 00 00 00 00 00 00 00 00 00 00 00 00 00 -- 02B630
00 00 00 00 00 00 00 00 00 00 00 00 00 00 00 00 -- 02B640
00 00 00 00 00 00 00 00 00 00 00 00 00 00 00 00 -- 02B650
00 00 00 00 00 00 00 00 00 00 00 00 00 00 00 00 -- 02B660
00 00 00 00 00 00 00 00 00 00 00 00 00 00 00 00 -- 02B670
00 00 00 00 00 00 00 00 00 00 00 00 00 00 00 00 -- 02B680
00 00 00 00 00 00 00 00 00 00 00 00 00 00 00 00 -- 02B690
00 00 00 00 00 00 00 00 00 00 00 00 00 00 00 00 -- 02B6A0
00 00 00 00 00 00 00 00 00 00 00 00 00 00 00 00 -- 02B6B0
00 00 00 00 00 00 00 00 00 00 00 00 00 00 00 00 -- 02B6C0
00 00 00 00 00 00 00 00 00 00 00 00 00 00 00 00 -- 02B6D0
00 00 00 00 00 00 00 00 00 00 00 00 00 00 00 00 -- 02B6E0
00 00 00 00 00 00 00 00 00 00 00 00 00 00 00 00 -- 02B6F0
00 00 00 00 00 00 00 00 00 00 00 00 00 00 00 00 -- 02B700
00 00 00 00 00 00 00 00 00 00 00 00 00 00 00 00 -- 02B710
00 00 00 00 00 00 00 00 00 00 00 00 00 00 00 00 -- 02B720
00 00 00 00 00 00 00 00 00 00 00 00 00 00 00 00 -- 02B730
00 00 00 00 00 00 00 00 00 00 00 00 00 00 00 00 -- 02B740
00 00 00 00 00 00 00 00 00 00 00 00 00 00 00 00 -- 02B750
00 00 00 00 00 00 00 00 00 00 00 00 00 00 00 00 -- 02B760
00 00 00 00 00 00 00 00 00 00 00 00 00 00 00 00 -- 02B770
00 00 00 00 00 00 00 00 00 00 00 00 00 00 00 00 -- 02B780
00 00 00 00 00 00 00 00 00 00 00 00 00 00 00 00 -- 02B790
00 00 00 00 00 00 00 00 00 00 00 00 00 00 00 00 -- 02B7A0
00 00 00 00 00 00 00 00 00 00 00 00 00 00 00 00 -- 02B7B0
00 00 00 00 00 00 00 00 00 00 00 00 00 00 00 00 -- 02B7C0
00 00 00 00 00 00 00 00 00 00 00 00 00 00 00 00 -- 02B7D0
00 00 00 00 00 00 00 00 00 00 00 00 00 00 00 00 -- 02B7E0
00 00 00 00 00 00 00 00 00 00 00 00 00 00 00 00 -- 02B7F0

00 00 00 00 00 00 00 00 00 00 00 00 00 00 01 FE -- 02B800
00 00 00 00 00 00 00 00 00 00 00 00 00 00 00 00 -- 02B810
00 00 00 00 00 00 00 00 00 00 00 00 00 00 00 00 -- 02B820
00 00 00 00 00 00 00 00 00 00 00 00 00 00 00 00 -- 02B830
00 00 00 00 00 00 00 00 00 00 00 00 00 00 00 00 -- 02B840
00 00 00 00 00 00 00 00 00 00 00 00 00 00 00 00 -- 02B850
00 00 00 00 00 00 00 00 00 00 00 00 00 00 00 00 -- 02B860
00 00 00 00 00 00 00 00 00 00 00 00 00 00 00 00 -- 02B870
00 00 00 00 00 00 00 00 00 00 00 00 00 00 00 00 -- 02B880
00 00 00 00 00 00 00 00 00 00 00 00 00 00 00 00 -- 02B890
00 00 00 00 00 00 00 00 00 00 00 00 00 00 00 00 -- 02B8A0
00 00 00 00 00 00 00 00 00 00 00 00 00 00 00 00 -- 02B8B0
```

```
00 00 00 00 00 00 00 00 00 00 00 00 00 00 00 00 -- 02B8C0
00 00 00 00 00 00 00 00 00 00 00 00 00 00 00 00 -- 02B8D0
00 00 00 00 00 00 00 00 00 00 00 00 00 00 00 00 -- 02B8E0
20 73 25 20 00 00 00 00 00 00 00 00 00 00 00 00 -- 02B8F0
6C 63 00 5E 20 73 25 20 00 5E 20 73 25 20 00 5E -- 02B900
20 74 61 20 72 6F 72 72 65 20 67 65 73 73 73 6F -- 02B910
64 67 00 0A 74 75 63 20 66 6F 20 74 72 6F 62 61 -- 02B920
20 74 61 20 72 6F 72 72 65 20 67 65 73 74 6C 65 -- 02B930
4C 54 00 0A 74 75 63 20 66 6F 20 74 72 6F 62 61 -- 02B940
32 2E 36 25 20 66 32 2E 36 25 20 3A 20 20 20 20 -- 02B950
20 66 32 2E 36 25 20 3A 20 20 20 20 52 42 00 66 -- 02B960
36 25 20 3A 20 20 65 7A 69 53 00 66 32 2E 36 25 -- 02B970
20 20 20 20 4C 54 00 66 32 2E 36 25 20 66 32 2E -- 02B980
61 4E 00 66 32 2E 36 25 20 66 32 2E 36 25 20 3A -- 02B990
65 6D 61 4E 00 73 33 31 2D 25 20 3A 20 20 65 6D -- 02B9A0
20 20 20 20 20 20 20 20 20 20 20 20 20 3A 20 20 -- 02B9B0
74 68 67 69 65 48 20 20 20 20 20 20 20 20 00 20 -- 02B9C0
20 3A 20 20 20 20 4C 54 00 20 68 74 64 69 57 20 -- 02B9D0
4C 42 00 20 20 20 20 20 20 20 20 20 20 20 20 20 -- 02B9E0
20 20 20 20 20 20 20 20 20 20 20 3A 20 20 20 20 -- 02B9F0
20 20 20 3A 20 20 65 7A 69 53 00 20 20 20 01 FE -- 02BA00
20 20 20 20 00 20 20 20 20 20 20 20 20 20 20 20 -- 02BA10
20 20 20 20 20 20 20 20 20 20 20 20 20 20 20 20 -- 02BA20
65 6D 75 73 65 72 00 64 6E 65 70 73 75 73 00 20 -- 02BA30
6F 43 74 65 47 20 6E 69 20 72 6F 72 72 65 20 00 -- 02BA40
75 74 75 63 74 63 00 00 0A 65 6C 62 61 54 72 6C -- 02BA50
00 02 00 01 00 00 00 00 00 07 00 00 00 00 64 70 -- 02BA60
00 00 00 53 4D 2E 00 00 53 4D 4C 2E 00 08 00 04 -- 02BA70
00 00 00 00 00 00 00 00 00 00 00 00 00 00 00 00 -- 02BA80
00 00 00 00 00 00 00 00 00 00 00 00 00 00 00 00 -- 02BA90
00 00 00 00 00 00 00 00 00 00 00 00 00 00 00 00 -- 02BAA0
00 00 00 00 00 00 00 00 00 00 00 00 00 00 00 00 -- 02BAB0
00 00 00 00 00 00 00 00 00 00 00 00 00 00 00 00 -- 02BAC0
00 00 00 00 00 00 00 00 00 00 00 00 00 00 00 00 -- 02BAD0
00 00 00 00 00 00 00 00 00 00 00 00 00 00 00 00 -- 02BAE0
00 00 00 00 00 00 00 00 00 00 00 00 00 00 00 00 -- 02BAF0
00 00 00 00 00 00 00 00 00 00 00 00 00 00 00 00 -- 02BB00
00 00 00 00 00 00 00 00 00 00 00 00 00 00 00 00 -- 02BB10
00 00 00 00 00 00 00 00 00 00 00 00 00 00 00 00 -- 02BB20
00 00 00 00 00 00 00 00 00 00 00 00 00 00 00 00 -- 02BB30
00 00 00 00 00 00 00 00 00 00 00 00 00 00 00 00 -- 02BB40
00 00 00 00 00 00 00 00 00 00 00 00 00 00 00 00 -- 02BB50
00 00 00 00 00 00 00 00 00 00 00 00 00 00 00 00 -- 02BB60
00 00 00 00 00 00 00 00 00 00 00 00 00 00 00 00 -- 02BB70
00 00 00 00 00 00 00 00 00 00 00 00 00 00 00 00 -- 02BB80
00 00 00 00 00 00 00 00 00 00 00 00 00 00 00 00 -- 02BB90

00 00 00 00 00 00 00 00 00 00 00 00 00 00 00 00 -- 02BBA0
00 00 00 00 00 00 00 00 00 00 00 00 00 00 00 00 -- 02BBB0
00 00 00 00 00 00 00 00 00 00 00 00 00 00 00 00 -- 02BBC0
00 00 00 00 00 00 00 00 00 00 00 00 00 00 00 00 -- 02BBD0
00 00 00 00 00 00 00 00 00 00 00 00 00 00 00 00 -- 02BBE0
00 00 00 00 00 00 00 00 00 00 00 00 00 00 00 00 -- 02BBF0
00 00 00 00 00 00 00 00 00 00 00 00 00 00 01 FE -- 02BC00
00 00 00 00 00 00 00 00 00 00 00 00 00 00 00 00 -- 02BC10
00 00 00 00 00 00 00 00 00 00 00 00 00 00 00 00 -- 02BC20
00 00 00 00 00 00 00 00 00 00 00 00 00 00 00 00 -- 02BC30
00 00 00 00 00 00 00 00 00 00 00 00 00 00 00 00 -- 02BC40
00 00 00 00 00 00 00 00 00 00 00 00 00 00 00 00 -- 02BC50
00 00 00 00 00 00 00 00 00 00 00 00 00 00 00 00 -- 02BC60
```

```
00 00 00 00 00 00 00 00 00 00 00 00 00 00 00 00 -- 02BC70
00 00 00 00 00 00 00 00 00 00 00 00 00 00 00 00 -- 02BC80
00 00 00 00 00 00 00 00 00 00 00 00 00 00 00 00 -- 02BC90
00 00 00 00 00 00 00 00 00 00 00 00 00 00 00 00 -- 02BCA0
00 00 00 00 00 00 00 00 00 00 00 00 00 00 00 00 -- 02BCB0
00 00 00 00 00 00 00 00 00 00 00 00 00 00 00 00 -- 02BCC0
00 00 00 00 00 00 00 00 00 00 00 00 00 00 00 00 -- 02BCD0
00 00 00 00 00 00 00 00 00 00 00 00 00 00 00 00 -- 02BCE0
00 00 00 00 00 00 00 00 00 00 00 00 00 00 00 00 -- 02BCF0
00 00 00 00 00 00 00 00 00 00 00 00 00 00 00 00 -- 02BD00
00 00 00 00 00 00 00 00 00 00 00 00 00 00 00 00 -- 02BD10
00 00 00 00 00 00 00 00 00 00 00 00 00 00 00 00 -- 02BD20
00 00 00 00 00 00 00 00 00 00 00 00 00 00 00 00 -- 02BD30
00 00 00 00 00 00 00 00 00 00 00 00 00 00 00 00 -- 02BD40
00 00 00 00 00 00 00 00 00 00 00 00 00 00 00 00 -- 02BD50
00 00 00 00 00 00 00 00 00 00 00 00 00 00 00 00 -- 02BD60
00 00 00 00 00 00 00 00 00 00 00 00 00 00 00 00 -- 02BD70
00 00 00 00 00 00 00 00 00 00 00 00 00 00 00 00 -- 02BD80
00 00 00 00 00 00 00 00 00 00 00 00 00 00 00 00 -- 02BD90
00 00 00 00 00 00 00 00 00 00 00 00 00 00 00 00 -- 02BDA0
00 00 00 00 00 00 00 00 00 00 00 00 00 00 00 00 -- 02BDB0
00 00 00 00 00 00 00 00 00 00 00 00 00 00 00 00 -- 02BDC0
00 00 00 00 00 00 00 00 00 00 00 00 00 00 00 00 -- 02BDD0
00 00 00 00 00 00 00 00 00 00 00 00 00 00 00 00 -- 02BDE0
00 00 00 00 00 00 00 00 00 00 00 00 00 00 00 00 -- 02BDF0
00 00 00 00 00 00 00 00 00 00 00 00 00 00 01 FE -- 02BE00
00 00 00 00 00 00 00 00 00 00 00 00 00 00 00 00 -- 02BE10
00 00 00 00 00 00 00 00 00 00 00 00 00 00 00 00 -- 02BE20
00 00 00 00 00 00 00 00 00 00 00 00 00 00 00 00 -- 02BE30
00 00 00 00 00 00 00 00 00 00 00 00 00 00 00 00 -- 02BE40
00 00 00 00 00 00 00 00 00 00 00 00 00 00 00 00 -- 02BE50
00 00 00 00 00 00 00 00 00 00 00 00 00 00 00 00 -- 02BE60
00 00 00 00 00 00 00 00 00 00 00 00 00 00 00 00 -- 02BE70
00 00 00 00 00 00 00 00 00 00 00 00 00 00 00 00 -- 02BE80
00 00 00 00 00 00 00 00 00 00 00 00 00 00 00 00 -- 02BE90
00 00 00 00 00 00 00 00 00 00 00 00 00 00 00 00 -- 02BEA0
00 00 00 00 00 00 00 00 00 00 00 00 00 00 00 00 -- 02BEB0
00 00 00 00 00 00 00 00 00 00 00 00 00 00 00 00 -- 02BEC0
00 00 00 00 00 00 00 00 00 00 00 00 00 00 00 00 -- 02BED0
00 00 00 00 00 00 00 00 00 00 00 00 00 00 00 00 -- 02BEE0
00 00 00 00 00 00 00 00 00 00 00 00 00 00 00 00 -- 02BEF0
00 00 00 00 00 00 00 00 00 00 00 00 00 00 00 00 -- 02BF00
00 00 00 00 00 00 00 00 00 00 00 00 00 00 00 00 -- 02BF10
00 00 00 00 00 00 00 00 00 00 00 00 00 00 00 00 -- 02BF20
00 00 00 00 00 00 00 00 00 00 00 00 00 00 00 00 -- 02BF30

00 00 00 00 00 00 00 00 00 00 00 00 00 00 00 00 -- 02BF40
00 00 00 00 00 00 00 00 00 00 00 00 00 00 00 00 -- 02BF50
00 00 00 00 00 00 00 00 00 00 00 00 00 00 00 00 -- 02BF60
00 00 00 00 00 00 00 00 00 00 00 00 00 00 00 00 -- 02BF70
00 00 00 00 00 00 00 00 00 00 00 00 00 00 00 00 -- 02BF80
00 00 00 00 00 00 00 00 00 00 00 00 00 00 00 00 -- 02BF90
00 00 00 00 00 00 00 00 00 00 00 00 00 00 00 00 -- 02BFA0
00 00 00 00 00 00 00 00 00 00 00 00 00 00 00 00 -- 02BFB0
00 00 00 00 00 00 00 00 00 00 00 00 00 00 00 00 -- 02BFC0
00 00 00 00 00 00 00 00 00 00 00 00 00 00 00 00 -- 02BFD0
00 00 00 00 00 00 00 00 00 00 00 00 00 00 00 00 -- 02BFE0
00 00 00 00 00 00 00 00 00 00 00 00 00 00 00 00 -- 02BFF0
00 00 00 00 00 00 00 00 00 00 00 00 00 00 01 FE -- 02C000
00 00 00 00 00 00 00 00 00 00 00 00 00 00 00 00 -- 02C010
```

```
00 00 00 00 00 00 00 00 00 00 00 00 00 00 00 00 -- 02C020
00 00 00 00 00 00 00 00 00 00 00 00 00 00 00 00 -- 02C030
00 00 00 00 00 00 00 00 00 00 00 00 00 00 00 00 -- 02C040
00 00 00 00 00 00 00 00 00 00 00 00 00 00 00 00 -- 02C050
00 00 00 00 00 00 00 00 00 00 00 00 00 00 00 00 -- 02C060
00 00 00 00 00 00 00 00 00 00 00 00 00 00 00 00 -- 02C070
00 00 00 00 00 00 00 00 00 00 00 00 00 00 00 00 -- 02C080
00 00 00 00 00 00 00 00 00 00 00 00 00 00 00 00 -- 02C090
00 00 00 00 00 00 00 00 00 00 00 00 00 00 00 00 -- 02C0A0
00 00 00 00 00 00 00 00 00 00 00 00 00 00 00 00 -- 02C0B0
00 00 00 00 00 00 00 00 00 00 00 00 00 00 00 00 -- 02C0C0
00 00 00 00 00 00 00 00 00 00 00 00 00 00 00 00 -- 02C0D0
00 00 00 00 00 00 00 00 00 00 00 00 00 00 00 00 -- 02C0E0
00 00 00 00 00 00 00 00 00 00 00 00 00 00 00 00 -- 02C0F0
00 00 00 00 00 00 00 00 00 00 00 00 00 00 00 00 -- 02C100
00 00 00 00 00 00 00 00 00 00 00 00 00 00 00 00 -- 02C110
00 00 00 00 00 00 00 00 00 00 00 00 00 00 00 00 -- 02C120
00 00 00 00 00 00 00 00 00 00 00 00 00 00 00 00 -- 02C130
00 00 00 00 00 00 00 00 00 00 00 00 00 00 00 00 -- 02C140
00 00 00 00 00 00 00 00 00 00 00 00 00 00 00 00 -- 02C150
00 00 00 00 00 00 00 00 00 00 00 00 00 00 00 00 -- 02C160
00 00 00 00 00 00 00 00 00 00 00 00 00 00 00 00 -- 02C170
00 00 00 00 00 00 00 00 00 00 00 00 00 00 00 00 -- 02C180
00 00 00 00 00 00 00 00 00 00 00 00 00 00 00 00 -- 02C190
00 00 00 00 00 00 00 00 00 00 00 00 00 00 00 00 -- 02C1A0
00 00 00 00 00 00 00 00 00 00 00 00 00 00 00 00 -- 02C1B0
00 00 00 00 00 00 00 00 00 00 00 00 00 00 00 00 -- 02C1C0
00 00 00 00 00 00 00 00 00 00 00 00 00 00 00 00 -- 02C1D0
00 00 00 00 00 00 00 00 00 00 00 00 00 00 00 00 -- 02C1E0
00 00 00 00 00 00 00 00 00 00 00 00 00 00 00 00 -- 02C1F0
00 00 00 00 00 00 00 00 00 00 00 00 00 00 01 FE -- 02C200
00 00 00 00 00 00 00 00 00 00 00 00 00 00 00 00 -- 02C210
00 00 00 00 00 00 00 00 00 00 00 00 00 00 00 00 -- 02C220
00 00 00 00 00 00 00 00 00 00 00 00 00 00 00 00 -- 02C230
00 00 00 00 00 00 00 00 00 00 00 00 00 00 00 00 -- 02C240
00 00 00 00 00 00 00 00 00 00 00 00 00 00 00 00 -- 02C250
00 00 00 00 00 00 00 00 00 00 00 00 00 00 00 00 -- 02C260
00 00 00 00 00 00 00 00 00 00 00 00 00 00 00 00 -- 02C270
00 00 00 00 00 00 00 00 00 00 00 00 00 00 00 00 -- 02C280
00 00 00 00 00 00 00 00 00 00 00 00 00 00 00 00 -- 02C290
00 00 00 00 00 00 00 00 00 00 00 00 00 00 00 00 -- 02C2A0
00 00 00 00 00 00 00 00 00 00 00 00 00 00 00 00 -- 02C2B0
00 00 00 00 00 00 00 00 00 00 00 00 00 00 00 00 -- 02C2C0
00 00 00 00 00 00 00 00 00 00 00 00 00 00 00 00 -- 02C2D0

00 00 00 00 00 00 00 00 00 00 00 00 00 00 00 00 -- 02C2E0
00 00 00 00 00 00 00 00 00 00 00 00 00 00 00 00 -- 02C2F0
00 00 00 00 00 00 00 00 00 00 00 00 00 00 00 00 -- 02C300
00 00 00 00 00 00 00 00 00 00 00 00 00 00 00 00 -- 02C310
00 00 00 00 00 00 00 00 00 00 00 00 00 00 00 00 -- 02C320
00 00 00 00 00 00 00 00 00 00 00 00 00 00 00 00 -- 02C330
00 00 00 00 00 00 00 00 00 00 00 00 00 00 00 00 -- 02C340
00 00 00 00 00 00 00 00 00 00 00 00 00 00 00 00 -- 02C350
00 00 00 00 00 00 00 00 00 00 00 00 00 00 00 00 -- 02C360
00 00 00 00 00 00 00 00 00 00 00 00 00 00 00 00 -- 02C370
00 00 00 00 00 00 00 00 00 00 00 00 00 00 00 00 -- 02C380
00 00 00 00 00 00 00 00 00 00 00 00 00 00 00 00 -- 02C390
00 00 00 00 00 00 00 00 00 00 00 00 00 00 00 00 -- 02C3A0
00 00 00 00 00 00 00 00 00 00 00 00 00 00 00 00 -- 02C3B0
00 00 00 00 00 00 00 00 00 00 00 00 00 00 00 00 -- 02C3C0
```

```
00 00 00 00 00 00 00 00 00 00 00 00 00 00 00 00 -- 02C3D0
00 00 00 00 00 00 00 00 00 00 00 00 00 00 00 00 -- 02C3E0
00 00 00 00 00 00 00 00 00 00 00 00 00 00 00 00 -- 02C3F0
00 00 00 00 00 00 00 00 00 00 00 00 00 00 01 FE -- 02C400
00 00 00 00 00 00 00 00 00 00 00 00 00 00 00 00 -- 02C410
00 00 00 00 00 00 00 00 00 00 00 00 00 00 00 00 -- 02C420
00 00 00 00 00 00 00 00 00 00 00 00 00 00 00 00 -- 02C430
00 00 00 00 00 00 00 00 00 00 00 00 00 00 00 00 -- 02C440
00 00 00 00 00 00 00 00 00 00 00 00 00 00 00 00 -- 02C450
00 00 00 00 00 00 00 00 00 00 00 00 00 00 00 00 -- 02C460
00 00 00 00 00 00 00 00 00 00 00 00 00 00 00 00 -- 02C470
00 00 00 00 00 00 00 00 00 00 00 00 00 00 00 00 -- 02C480
00 00 00 00 00 00 00 00 00 00 00 00 00 00 00 00 -- 02C490
00 00 00 00 00 00 00 00 00 00 00 00 00 00 00 00 -- 02C4A0
00 00 00 00 00 00 00 00 00 00 00 00 00 00 00 00 -- 02C4B0
00 00 00 00 00 00 00 00 00 00 00 00 00 00 00 00 -- 02C4C0
00 00 00 00 00 00 00 00 00 00 00 00 00 00 00 00 -- 02C4D0
00 00 00 00 00 00 00 00 00 00 00 00 00 00 00 00 -- 02C4E0
00 00 00 00 00 00 00 00 00 00 00 00 00 00 00 00 -- 02C4F0
00 00 00 00 00 00 00 00 00 00 00 00 00 00 00 00 -- 02C500
00 00 00 00 00 00 00 00 00 00 00 00 00 00 00 00 -- 02C510
00 00 00 00 00 00 00 00 00 00 00 00 00 00 00 00 -- 02C520
00 00 00 00 00 00 00 00 00 00 00 00 00 00 00 00 -- 02C530
00 00 00 00 00 00 00 00 00 00 00 00 00 00 00 00 -- 02C540
00 00 00 00 00 00 00 00 00 00 00 00 00 00 00 00 -- 02C550
00 00 00 00 00 00 00 00 00 00 00 00 00 00 00 00 -- 02C560
00 00 00 00 00 00 00 00 00 00 00 00 00 00 00 00 -- 02C570
00 00 00 00 00 00 00 00 00 00 00 00 00 00 00 00 -- 02C580
00 00 00 00 00 00 00 00 00 00 00 00 00 00 00 00 -- 02C590
00 00 00 00 00 00 00 00 00 00 00 00 00 00 00 00 -- 02C5A0
00 00 00 00 00 00 00 00 00 00 00 00 00 00 00 00 -- 02C5B0
00 00 00 00 00 00 00 00 00 00 00 00 00 00 00 00 -- 02C5C0
00 00 00 00 00 00 00 00 00 00 00 00 00 00 00 00 -- 02C5D0
00 00 00 00 00 00 00 00 00 00 00 00 00 00 00 00 -- 02C5E0
00 00 00 00 00 00 00 00 00 00 00 00 00 00 00 00 -- 02C5F0
00 00 00 00 00 00 00 00 00 00 00 00 00 00 01 FE -- 02C600
00 00 00 00 00 00 00 00 00 00 00 00 00 00 00 00 -- 02C610
00 00 00 00 00 00 00 00 00 00 00 00 00 00 00 00 -- 02C620
00 00 00 00 00 00 00 00 00 00 00 00 00 00 00 00 -- 02C630
00 00 00 00 00 00 00 00 00 00 00 00 00 00 00 00 -- 02C640
00 00 00 00 00 00 00 00 00 00 00 00 00 00 00 00 -- 02C650
00 00 00 00 00 00 00 00 00 00 00 00 00 00 00 00 -- 02C660
00 00 00 00 00 00 00 00 00 00 00 00 00 00 00 00 -- 02C670

00 00 00 00 00 00 00 00 00 00 00 00 00 00 00 00 -- 02C680
00 00 00 00 00 00 00 00 00 00 00 00 00 00 00 00 -- 02C690
00 00 00 00 00 00 00 00 00 00 00 00 00 00 00 00 -- 02C6A0
00 00 00 00 00 00 00 00 00 00 00 00 00 00 00 00 -- 02C6B0
00 00 00 00 00 00 00 00 00 00 00 00 00 00 00 00 -- 02C6C0
00 00 00 00 00 00 00 00 00 00 00 00 00 00 00 00 -- 02C6D0
00 00 00 00 00 00 00 00 00 00 00 00 00 00 00 00 -- 02C6E0
00 00 00 00 00 00 00 00 00 00 00 00 00 00 00 00 -- 02C6F0
00 00 00 00 00 00 00 00 00 00 00 00 00 00 00 00 -- 02C700
00 00 00 00 00 00 00 00 00 00 00 00 00 00 00 00 -- 02C710
00 00 00 00 00 00 00 00 00 00 00 00 00 00 00 00 -- 02C720
00 00 00 00 00 00 00 00 00 00 00 00 00 00 00 00 -- 02C730
00 00 00 00 00 00 00 00 00 00 00 00 00 00 00 00 -- 02C740
00 00 00 00 00 00 00 00 00 00 00 00 00 00 00 00 -- 02C750
00 00 00 00 00 00 00 00 00 00 00 00 00 00 00 00 -- 02C760
00 00 00 00 00 00 00 00 00 00 00 00 00 00 00 00 -- 02C770
```

```
00 00 00 00 00 00 00 00 00 00 00 00 00 00 00 00 -- 02C780
00 00 00 00 00 00 00 00 00 00 00 00 00 00 00 00 -- 02C790
00 00 00 00 00 00 00 00 00 00 00 00 00 00 00 00 -- 02C7A0
00 00 00 00 00 00 00 00 00 00 00 00 00 00 00 00 -- 02C7B0
00 00 00 00 00 00 00 00 00 00 00 00 00 00 00 00 -- 02C7C0
00 00 00 00 00 00 00 00 00 00 00 00 00 00 00 00 -- 02C7D0
00 00 00 00 00 00 00 00 00 00 00 00 00 00 00 00 -- 02C7E0
00 00 00 00 00 00 00 00 00 00 00 00 00 00 00 00 -- 02C7F0
00 00 00 00 00 00 00 00 00 00 00 00 00 00 01 FE -- 02C800
00 00 00 00 00 00 00 00 00 00 00 00 00 00 00 00 -- 02C810
00 00 00 00 00 00 00 00 00 00 00 00 00 00 00 00 -- 02C820
00 00 00 00 00 00 00 00 00 00 00 00 00 00 00 00 -- 02C830
00 00 00 00 00 00 00 00 00 00 00 00 00 00 00 00 -- 02C840
00 00 00 00 00 00 00 00 00 00 00 00 00 00 00 00 -- 02C850
00 00 00 00 00 00 00 00 00 00 00 00 00 00 00 00 -- 02C860
00 00 00 00 00 00 00 00 00 00 00 00 00 00 00 00 -- 02C870
00 00 00 00 00 00 00 00 00 00 00 00 00 00 00 00 -- 02C880
00 00 00 00 00 00 00 00 00 00 00 00 00 00 00 00 -- 02C890
00 00 00 00 00 00 00 00 00 00 00 00 00 00 00 00 -- 02C8A0
00 00 00 00 00 00 00 00 00 00 00 00 00 00 00 00 -- 02C8B0
00 00 00 00 00 00 00 00 00 00 00 00 00 00 00 00 -- 02C8C0
00 00 00 00 00 00 00 00 00 00 00 00 00 00 00 00 -- 02C8D0
00 00 00 00 00 00 00 00 00 00 00 00 00 00 00 00 -- 02C8E0
00 00 00 00 00 00 00 00 00 00 00 00 00 00 00 00 -- 02C8F0
00 00 00 00 00 00 00 00 00 00 00 00 00 00 00 00 -- 02C900
00 00 00 00 00 00 00 00 00 00 00 00 00 00 00 00 -- 02C910
00 00 00 00 00 00 00 00 00 00 00 00 00 00 00 00 -- 02C920
00 00 00 00 00 00 00 00 00 00 00 00 00 00 00 00 -- 02C930
00 00 00 00 00 00 00 00 00 00 00 00 00 00 00 00 -- 02C940
00 00 00 00 00 00 00 00 00 00 00 00 00 00 00 00 -- 02C950
00 00 00 00 00 00 00 00 00 00 00 00 00 00 00 00 -- 02C960
00 00 00 00 00 00 00 00 00 00 00 00 00 00 00 00 -- 02C970
00 00 00 00 00 00 00 00 00 00 00 00 00 00 00 00 -- 02C980
00 00 00 00 00 00 00 00 00 00 00 00 00 00 00 00 -- 02C990
00 00 00 00 00 00 00 00 00 00 00 00 00 00 00 00 -- 02C9A0
00 00 00 00 00 00 00 00 00 00 00 00 00 00 00 00 -- 02C9B0
00 00 00 00 00 00 00 00 00 00 00 00 00 00 00 00 -- 02C9C0
00 00 00 00 00 00 00 00 00 00 00 00 00 00 00 00 -- 02C9D0
00 00 00 00 00 00 00 00 00 00 00 00 00 00 00 00 -- 02C9E0
00 00 00 00 00 00 00 00 00 00 00 00 00 00 00 00 -- 02C9F0
00 00 00 00 00 00 00 00 00 00 00 00 00 00 01 FE -- 02CA00
00 00 00 00 00 00 00 00 00 00 00 00 00 00 00 00 -- 02CA10
00 00 00 00 00 00 00 00 00 00 00 00 00 00 00 00 -- 02CA20
00 00 00 00 00 00 00 00 00 00 00 00 00 00 00 00 -- 02CA30
00 00 00 00 00 00 00 00 00 00 00 00 00 00 00 00 -- 02CA40
00 00 00 00 00 00 00 00 00 00 00 00 00 00 00 00 -- 02CA50
00 00 00 00 00 00 00 00 00 00 00 00 00 00 00 00 -- 02CA60
00 00 00 00 00 00 00 00 00 00 00 00 00 00 00 00 -- 02CA70
00 00 00 00 00 00 00 00 00 00 00 00 00 00 00 00 -- 02CA80
00 00 00 00 00 00 00 00 00 00 00 00 00 00 00 00 -- 02CA90
00 00 00 00 00 00 00 00 00 00 00 00 00 00 00 00 -- 02CAA0
00 00 00 00 00 00 00 00 00 00 00 00 00 00 00 00 -- 02CAB0
00 00 00 00 00 00 00 00 00 00 00 00 00 00 00 00 -- 02CAC0
00 00 00 00 00 00 00 00 00 00 00 00 00 00 00 00 -- 02CAD0
00 00 00 00 00 00 00 00 00 00 00 00 00 00 00 00 -- 02CAE0
00 00 00 00 00 00 00 00 00 00 00 00 00 00 00 00 -- 02CAF0
00 00 00 00 00 00 00 00 00 00 00 00 00 00 00 00 -- 02CB00
00 00 00 00 00 00 00 00 00 00 00 00 00 00 00 00 -- 02CB10
00 00 00 00 00 00 00 00 00 00 00 00 00 00 00 00 -- 02CB20
```

```
00  00  00  00  00  00  00  00  00  00  00  00  00  00  00  00  --  02CB30
00  00  00  00  00  00  00  00  00  00  00  00  00  00  00  00  --  02CB40
00  00  00  00  00  00  00  00  00  00  00  00  00  00  00  00  --  02CB50
00  00  00  00  00  00  00  00  00  00  00  00  00  00  00  00  --  02CB60
00  00  00  00  00  00  00  00  00  00  00  00  00  00  00  00  --  02CB70
00  00  00  00  00  00  00  00  00  00  00  00  00  00  00  00  --  02CB80
00  00  00  00  00  00  00  00  00  00  00  00  00  00  00  00  --  02CB90
00  00  00  00  00  00  00  00  00  00  00  00  00  00  00  00  --  02CBA0
00  00  00  00  00  00  00  00  00  00  00  00  00  00  00  00  --  02CBB0
00  00  00  00  00  00  00  00  00  00  00  00  00  00  00  00  --  02CBC0
00  00  00  00  00  00  00  00  00  00  00  00  00  00  00  00  --  02CBD0
00  00  00  00  00  00  00  00  00  00  00  00  00  00  00  00  --  02CBE0
00  00  00  00  00  00  00  00  00  00  00  00  00  00  00  00  --  02CBF0
00  00  00  00  00  00  00  00  00  00  00  00  00  00  01  FE  --  02CC00
00  00  00  00  00  00  00  00  00  00  00  00  00  00  00  00  --  02CC10
00  00  00  00  00  00  00  00  00  00  00  00  00  00  00  00  --  02CC20
00  00  00  00  00  00  00  00  00  00  00  00  00  00  00  00  --  02CC30
00  00  00  00  00  00  00  00  00  00  00  00  00  00  00  00  --  02CC40
00  00  00  00  00  00  00  00  00  00  00  00  00  00  00  00  --  02CC50
00  00  00  00  00  00  00  00  00  00  00  00  00  00  00  00  --  02CC60
00  00  00  00  00  00  00  00  00  00  00  00  00  00  00  00  --  02CC70
00  00  00  00  00  00  00  00  00  00  00  00  00  00  00  00  --  02CC80
00  00  00  00  00  00  00  00  00  00  00  00  00  00  00  00  --  02CC90
00  00  00  00  00  00  00  00  00  00  00  00  00  00  00  00  --  02CCA0
00  00  00  00  00  00  00  00  00  00  00  00  00  00  00  00  --  02CCB0
00  00  00  00  00  00  00  00  00  00  00  00  00  00  00  00  --  02CCC0
00  00  00  00  00  00  00  00  00  00  00  00  00  00  00  00  --  02CCD0
00  00  00  00  00  00  00  00  00  00  00  00  00  00  00  00  --  02CCE0
00  00  00  00  00  00  00  00  00  00  00  00  00  00  00  00  --  02CCF0
00  00  00  00  00  00  00  00  00  00  00  00  00  00  00  00  --  02CD00
00  00  00  00  00  00  00  00  00  00  00  00  00  00  00  00  --  02CD10
00  00  00  00  00  00  00  00  00  00  00  00  00  00  00  00  --  02CD20
00  00  00  00  00  00  00  00  00  00  00  00  00  00  00  00  --  02CD30
00  00  00  00  00  00  00  00  00  00  00  00  00  00  00  00  --  02CD40
00  00  00  00  00  00  00  00  00  00  00  00  00  00  00  00  --  02CD50
00  00  00  00  00  00  00  00  00  00  00  00  00  00  00  00  --  02CD60
00  00  00  00  00  00  00  00  00  00  00  00  00  00  00  00  --  02CD70
00  00  00  00  00  00  00  00  00  00  00  00  00  00  00  00  --  02CD80
00  00  00  00  00  00  00  00  00  00  00  00  00  00  00  00  --  02CD90
00  00  00  00  00  00  00  00  00  00  00  00  00  00  00  00  --  02CDA0
00  00  00  00  00  00  00  00  00  00  00  00  00  00  00  00  --  02CDB0

00  00  00  00  00  00  00  00  00  00  00  00  00  00  00  00  --  02CDC0
00  00  00  00  00  00  00  00  00  00  00  00  00  00  00  00  --  02CDD0
00  00  00  00  00  00  00  00  00  00  00  00  00  00  00  00  --  02CDE0
00  00  00  00  00  00  00  00  00  00  00  00  00  00  00  00  --  02CDF0
00  00  00  00  00  00  00  00  00  00  00  00  00  00  01  FE  --  02CE00
00  00  00  00  00  00  00  00  00  00  00  00  00  00  00  00  --  02CE10
00  00  00  00  00  00  00  00  00  00  00  00  00  00  00  00  --  02CE20
00  00  00  00  00  00  00  00  00  00  00  00  00  00  00  00  --  02CE30
00  00  00  00  00  00  00  00  00  00  00  00  00  00  00  00  --  02CE40
00  00  00  00  00  00  00  00  00  00  00  00  00  00  00  00  --  02CE50
00  00  00  00  00  00  00  00  00  00  00  00  00  00  00  00  --  02CE60
00  00  00  00  00  00  00  00  00  00  00  00  00  00  00  00  --  02CE70
00  00  00  00  00  00  00  00  00  00  00  00  00  00  00  00  --  02CE80
00  00  00  00  00  00  00  00  00  00  00  00  00  00  00  00  --  02CE90
00  00  00  00  00  00  00  00  00  00  00  00  00  00  00  00  --  02CEA0
00  00  00  00  00  00  00  00  00  00  00  00  00  00  00  00  --  02CEB0
00  00  00  00  00  00  00  00  00  00  00  00  00  00  00  00  --  02CEC0
00  00  00  00  00  00  00  00  00  00  00  00  00  00  00  00  --  02CED0
```

205

```
00 00 00 00 00 00 00 00 00 00 00 00 00 00 00 00 -- 02CEE0
00 00 00 00 00 00 00 00 00 00 00 00 00 00 00 00 -- 02CEF0
00 00 00 00 00 00 00 00 00 00 00 00 00 00 00 00 -- 02CF00
00 00 00 00 00 00 00 00 00 00 00 00 00 00 00 00 -- 02CF10
00 00 00 00 00 00 00 00 00 00 00 00 00 00 00 00 -- 02CF20
00 00 00 00 00 00 00 00 00 00 00 00 00 00 00 00 -- 02CF30
00 00 00 00 00 00 00 00 00 00 00 00 00 00 00 00 -- 02CF40
00 00 00 00 00 00 00 00 00 00 00 00 00 00 00 00 -- 02CF50
00 00 00 00 00 00 00 00 00 00 00 00 00 00 00 00 -- 02CF60
00 00 00 00 00 00 00 00 00 00 00 00 00 00 00 00 -- 02CF70
00 00 00 00 00 00 00 00 00 00 00 00 00 00 00 00 -- 02CF80
00 00 00 00 00 00 00 00 00 00 00 00 00 00 00 00 -- 02CF90
00 00 00 00 00 00 00 00 00 00 00 00 00 00 00 00 -- 02CFA0
00 00 00 00 00 00 00 00 00 00 00 00 00 00 00 00 -- 02CFB0
00 00 00 00 00 00 00 00 00 00 00 00 00 00 00 00 -- 02CFC0
00 00 00 00 00 00 00 00 00 00 00 00 00 00 00 00 -- 02CFD0
00 00 00 00 00 00 00 00 00 00 00 00 00 00 00 00 -- 02CFE0
00 00 00 00 00 00 00 00 00 00 00 00 00 00 00 00 -- 02CFF0
00 00 00 00 00 00 00 00 00 00 00 00 00 00 01 FE -- 02D000
00 00 00 00 00 00 00 00 00 00 00 00 00 00 00 00 -- 02D010
00 00 00 00 00 00 00 00 00 00 00 00 00 00 00 00 -- 02D020
00 00 00 00 00 00 00 00 00 00 00 00 00 00 00 00 -- 02D030
00 00 00 00 00 00 00 00 00 00 00 00 00 00 00 00 -- 02D040
00 00 00 00 00 00 00 00 00 00 00 00 00 00 00 00 -- 02D050
00 00 00 00 00 00 00 00 00 00 00 00 00 00 00 00 -- 02D060
00 00 00 00 00 00 00 00 00 00 00 00 00 00 00 00 -- 02D070
00 00 00 00 00 00 00 00 00 00 00 00 00 00 00 00 -- 02D080
00 00 00 00 00 00 00 00 00 00 00 00 00 00 00 00 -- 02D090
00 00 00 00 00 00 00 00 00 00 00 00 00 00 00 00 -- 02D0A0
00 00 00 00 00 00 00 00 00 00 00 00 00 00 00 00 -- 02D0B0
00 00 00 00 00 00 00 00 00 00 00 00 00 00 00 00 -- 02D0C0
00 00 00 00 00 00 00 00 00 00 00 00 00 00 00 00 -- 02D0D0
00 00 00 00 00 00 00 00 00 00 00 00 00 00 00 00 -- 02D0E0
00 00 00 00 00 00 00 00 00 00 00 00 00 00 00 00 -- 02D0F0
00 00 00 00 00 00 00 00 00 00 00 00 00 00 00 00 -- 02D100
00 00 00 00 00 00 00 00 00 00 00 00 00 00 00 00 -- 02D110
00 00 00 00 00 00 00 00 00 00 00 00 00 00 00 00 -- 02D120
00 00 00 00 00 00 00 00 00 00 00 00 00 00 00 00 -- 02D130
00 00 00 00 00 00 00 00 00 00 00 00 00 00 00 00 -- 02D140
00 00 00 00 00 00 00 00 00 00 00 00 00 00 00 00 -- 02D150

00 00 00 00 00 00 00 00 00 00 00 00 00 00 00 00 -- 02D160
00 00 00 00 00 00 00 00 00 00 00 00 00 00 00 00 -- 02D170
00 00 00 00 00 00 00 00 00 00 00 00 00 00 00 00 -- 02D180
00 00 00 00 00 00 00 00 00 00 00 00 00 00 00 00 -- 02D190
00 00 00 00 00 00 00 00 00 00 00 00 00 00 00 00 -- 02D1A0
00 00 00 00 00 00 00 00 00 00 00 00 00 00 00 00 -- 02D1B0
00 00 00 00 00 00 00 00 00 00 00 00 00 00 00 00 -- 02D1C0
00 00 00 00 00 00 00 00 00 00 00 00 00 00 00 00 -- 02D1D0
00 00 00 00 00 00 00 00 00 00 00 00 00 00 00 00 -- 02D1E0
00 00 00 00 00 00 00 00 00 00 00 00 00 00 00 00 -- 02D1F0
00 00 00 00 00 00 00 00 00 00 00 00 00 00 01 FE -- 02D200
00 00 00 00 00 00 00 00 00 00 00 00 00 00 00 00 -- 02D210
00 00 00 00 00 00 00 00 00 00 00 00 00 00 00 00 -- 02D220
00 00 00 00 00 00 00 00 00 00 00 00 00 00 00 00 -- 02D230
00 00 00 00 00 00 00 00 00 00 00 00 00 00 00 00 -- 02D240
00 00 00 00 00 00 00 00 00 00 00 00 00 00 00 00 -- 02D250
00 00 00 00 00 00 00 00 00 00 00 00 00 00 00 00 -- 02D260
00 00 00 00 00 00 00 00 00 00 00 00 00 00 00 00 -- 02D270
00 00 00 00 00 00 00 00 00 00 00 00 00 00 00 00 -- 02D280
```

```
00 00 00 00 00 00 00 00 00 00 00 00 00 00 00 00 -- 02D290
00 00 00 00 00 00 00 00 00 00 00 00 00 00 00 00 -- 02D2A0
00 00 00 00 00 00 00 00 00 00 00 00 00 00 00 00 -- 02D2B0
00 00 00 00 00 00 00 00 00 00 00 00 00 00 00 00 -- 02D2C0
00 00 00 00 00 00 00 00 00 00 00 00 00 00 00 00 -- 02D2D0
00 00 00 00 00 00 00 00 00 00 00 00 00 00 00 00 -- 02D2E0
00 00 00 00 00 00 00 00 00 00 00 00 00 00 00 00 -- 02D2F0
00 00 00 00 00 00 00 00 00 00 00 00 00 00 00 00 -- 02D300
00 00 00 00 00 00 00 00 00 00 00 00 00 00 00 00 -- 02D310
00 00 00 00 00 00 00 00 00 00 00 00 00 00 00 00 -- 02D320
00 00 00 00 00 00 00 00 00 00 00 00 00 00 00 00 -- 02D330
00 00 00 00 00 00 00 00 00 00 00 00 00 00 00 00 -- 02D340
00 00 00 00 00 00 00 00 00 00 00 00 00 00 00 00 -- 02D350
00 00 00 00 00 00 00 00 00 00 00 00 00 00 00 00 -- 02D360
00 00 00 00 00 00 00 00 00 00 00 00 00 00 00 00 -- 02D370
00 00 00 00 00 00 00 00 00 00 00 00 00 00 00 00 -- 02D380
00 00 00 00 00 00 00 00 00 00 00 00 00 00 00 00 -- 02D390
00 00 00 00 00 00 00 00 00 00 00 00 00 00 00 00 -- 02D3A0
00 00 00 00 00 00 00 00 00 00 00 00 00 00 00 00 -- 02D3B0
00 00 00 00 00 00 00 00 00 00 00 00 00 00 00 00 -- 02D3C0
00 00 00 00 00 00 00 00 00 00 00 00 00 00 00 00 -- 02D3D0
00 00 00 00 00 00 00 00 00 00 00 00 00 00 00 00 -- 02D3E0
00 00 00 00 00 00 00 00 00 00 00 00 00 00 00 00 -- 02D3F0
00 00 00 00 00 00 00 00 00 00 00 00 00 00 01 FE -- 02D400
00 00 00 00 00 00 00 00 00 00 00 00 00 00 00 00 -- 02D410
00 00 00 00 00 00 00 00 00 00 00 00 00 00 00 00 -- 02D420
00 00 00 00 00 00 00 00 00 00 00 00 00 00 00 00 -- 02D430
00 00 00 00 00 00 00 00 00 00 00 00 00 00 00 00 -- 02D440
00 00 00 00 00 00 00 00 00 00 00 00 00 00 00 00 -- 02D450
00 00 00 00 00 00 00 00 00 00 00 00 00 00 00 00 -- 02D460
00 00 00 00 00 00 00 00 00 00 00 00 00 00 00 00 -- 02D470
00 00 00 00 00 00 00 00 00 00 00 00 00 00 00 00 -- 02D480
00 00 00 00 00 00 00 00 00 00 00 00 00 00 00 00 -- 02D490
00 00 00 00 00 00 00 00 00 00 00 00 00 00 00 00 -- 02D4A0
00 00 00 00 00 00 00 00 00 00 00 00 00 00 00 00 -- 02D4B0
00 00 00 00 00 00 00 00 00 00 00 00 00 00 00 00 -- 02D4C0
00 00 00 00 00 00 00 00 00 00 00 00 00 00 00 00 -- 02D4D0
00 00 00 00 00 00 00 00 00 00 00 00 00 00 00 00 -- 02D4E0
00 00 00 00 00 00 00 00 00 00 00 00 00 00 00 00 -- 02D4F0

00 00 00 00 00 00 00 00 00 00 00 00 00 00 00 00 -- 02D500
00 00 00 00 00 00 00 00 00 00 00 00 00 00 00 00 -- 02D510
00 00 00 00 00 00 00 00 00 00 00 00 00 00 00 00 -- 02D520
00 00 00 00 00 00 00 00 00 00 00 00 00 00 00 00 -- 02D530
00 00 00 00 00 00 00 00 00 00 00 00 00 00 00 00 -- 02D540
00 00 00 00 00 00 00 00 00 00 00 00 00 00 00 00 -- 02D550
00 00 00 00 00 00 00 00 00 00 00 00 00 00 00 00 -- 02D560
00 00 00 00 00 00 00 00 00 00 00 00 00 00 00 00 -- 02D570
00 00 00 00 00 00 00 00 00 00 00 00 00 00 00 00 -- 02D580
00 00 00 00 00 00 00 00 00 00 00 00 00 00 00 00 -- 02D590
00 00 00 00 00 00 00 00 00 00 00 00 00 00 00 00 -- 02D5A0
00 00 00 00 00 00 00 00 00 00 00 00 00 00 00 00 -- 02D5B0
00 00 00 00 00 00 00 00 00 00 00 00 00 00 00 00 -- 02D5C0
00 00 00 00 00 00 00 00 00 00 00 00 00 00 00 00 -- 02D5D0
00 00 00 00 00 00 00 00 00 00 00 00 00 00 00 00 -- 02D5E0
00 00 00 00 00 00 00 00 00 00 00 00 00 00 00 00 -- 02D5F0
00 00 00 00 00 00 00 00 00 00 00 00 00 00 01 FE -- 02D600
00 00 00 00 00 00 00 00 00 00 00 00 00 00 00 00 -- 02D610
00 00 00 00 00 00 00 00 00 00 00 00 00 00 00 00 -- 02D620
00 00 00 00 00 00 00 00 00 00 00 00 00 00 00 00 -- 02D630
```

```
00 00 00 00 00 00 00 00 00 00 00 00 00 00 00 00 -- 02D640
00 00 00 00 00 00 00 00 00 00 00 00 00 00 00 00 -- 02D650
00 00 00 00 00 00 00 00 00 00 00 00 00 00 00 00 -- 02D660
00 00 00 00 00 00 00 00 00 00 00 00 00 00 00 00 -- 02D670
00 00 00 00 00 00 00 00 00 00 00 00 00 00 00 00 -- 02D680
00 00 00 00 00 00 00 00 00 00 00 00 00 00 00 00 -- 02D690
00 00 00 00 00 00 00 00 00 00 00 00 00 00 00 00 -- 02D6A0
00 00 00 00 00 00 00 00 00 00 00 00 00 00 00 00 -- 02D6B0
00 00 00 00 00 00 00 00 00 00 00 00 00 00 00 00 -- 02D6C0
00 00 00 00 00 00 00 00 00 00 00 00 00 00 00 00 -- 02D6D0
00 00 00 00 00 00 00 00 00 00 00 00 00 00 00 00 -- 02D6E0
00 00 00 00 00 00 00 00 00 00 00 00 00 00 00 00 -- 02D6F0
00 00 00 00 00 00 00 00 00 00 00 00 00 00 00 00 -- 02D700
00 00 00 00 00 00 00 00 00 00 00 00 00 00 00 00 -- 02D710
00 00 00 00 00 00 00 00 00 00 00 00 00 00 00 00 -- 02D720
00 00 00 00 00 00 00 00 00 00 00 00 00 00 00 00 -- 02D730
00 00 00 00 00 00 00 00 00 00 00 00 00 00 00 00 -- 02D740
00 00 00 00 00 00 00 00 00 00 00 00 00 00 00 00 -- 02D750
00 00 00 00 00 00 00 00 00 00 00 00 00 00 00 00 -- 02D760
00 00 00 00 00 00 00 00 00 00 00 00 00 00 00 00 -- 02D770
00 00 00 00 00 00 00 00 00 00 00 00 00 00 00 00 -- 02D780
00 00 00 00 00 00 00 00 00 00 00 00 00 00 00 00 -- 02D790
00 00 00 00 00 00 00 00 00 00 00 00 00 00 00 00 -- 02D7A0
00 00 00 00 00 00 00 00 00 00 00 00 00 00 00 00 -- 02D7B0
00 00 00 00 00 00 00 00 00 00 00 00 00 00 00 00 -- 02D7C0
00 00 00 00 00 00 00 00 00 00 00 00 00 00 00 00 -- 02D7D0
00 00 00 00 00 00 00 00 00 00 00 00 00 00 00 00 -- 02D7E0
00 00 00 00 00 00 00 00 00 00 00 00 00 00 00 00 -- 02D7F0
00 00 00 00 00 00 00 00 00 00 00 00 00 00 01 FE -- 02D800
00 00 00 00 00 00 00 00 00 00 00 00 00 00 00 00 -- 02D810
00 00 00 00 00 00 00 00 00 00 00 00 00 00 00 00 -- 02D820
00 00 00 00 00 00 00 00 00 00 00 00 00 00 00 00 -- 02D830
00 00 00 00 00 00 00 00 00 00 00 00 00 00 00 00 -- 02D840
00 00 00 00 00 00 00 00 00 00 00 00 00 00 00 00 -- 02D850
00 00 00 00 00 00 00 00 00 00 00 00 00 00 00 00 -- 02D860
00 00 00 00 00 00 00 00 00 00 00 00 00 00 00 00 -- 02D870
00 00 00 00 00 00 00 00 00 00 00 00 00 00 00 00 -- 02D880
00 00 00 00 00 00 00 00 00 00 00 00 00 00 00 00 -- 02D890

00 00 00 00 00 00 00 00 00 00 00 00 00 00 00 00 -- 02D8A0
00 00 00 00 00 00 00 00 00 00 00 00 00 00 00 00 -- 02D8B0
00 00 00 00 00 00 00 00 00 00 00 00 00 00 00 00 -- 02D8C0
00 00 00 00 00 00 00 00 00 00 00 00 00 00 00 00 -- 02D8D0
00 00 00 00 00 00 00 00 00 00 00 00 00 00 00 00 -- 02D8E0
00 00 00 00 00 00 00 00 00 00 00 00 00 00 00 00 -- 02D8F0
00 00 00 00 00 00 00 00 00 00 00 00 00 00 00 00 -- 02D900
00 00 00 00 00 00 00 00 00 00 00 00 00 00 00 00 -- 02D910
00 00 00 00 00 00 00 00 00 00 00 00 00 00 00 00 -- 02D920
00 00 00 00 00 00 00 00 00 00 00 00 00 00 00 00 -- 02D930
00 00 00 00 00 00 00 00 00 00 00 00 00 00 00 00 -- 02D940
00 00 00 00 00 00 00 00 00 00 00 00 00 00 00 00 -- 02D950
00 00 00 00 00 00 00 00 00 00 00 00 00 00 00 00 -- 02D960
00 00 00 00 00 00 00 00 00 00 00 00 00 00 00 00 -- 02D970
00 00 00 00 00 00 00 00 00 00 00 00 00 00 00 00 -- 02D980
00 00 00 00 00 00 00 00 00 00 00 00 00 00 00 00 -- 02D990
00 00 00 00 00 00 00 00 00 00 00 00 00 00 00 00 -- 02D9A0
00 00 00 00 00 00 00 00 00 00 00 00 00 00 00 00 -- 02D9B0
00 00 00 00 00 00 00 00 00 00 00 00 00 00 00 00 -- 02D9C0
00 00 00 00 00 00 00 00 00 00 00 00 00 00 00 00 -- 02D9D0
00 00 00 00 00 00 00 00 00 00 00 00 00 00 00 00 -- 02D9E0
```

```
00 00 00 00 00 00 00 00 00 00 00 00 00 00 00 00 -- 02D9F0
00 00 00 00 00 00 00 00 00 00 00 00 00 00 01 FE -- 02DA00
00 00 00 00 00 00 00 00 00 00 00 00 00 00 00 00 -- 02DA10
00 00 00 00 00 00 00 00 00 00 00 00 00 00 00 00 -- 02DA20
00 00 00 00 00 00 00 00 00 00 00 00 00 00 00 00 -- 02DA30
00 00 00 00 00 00 00 00 00 00 00 00 00 00 00 00 -- 02DA40
00 00 00 00 00 00 00 00 00 00 00 00 00 00 00 00 -- 02DA50
00 00 00 00 00 00 00 00 00 00 00 00 00 00 00 00 -- 02DA60
00 00 00 00 00 00 00 00 00 00 00 00 00 00 00 00 -- 02DA70
00 00 00 00 00 00 00 00 00 00 00 00 00 00 00 00 -- 02DA80
00 00 00 00 00 00 00 00 00 00 00 00 00 00 00 00 -- 02DA90
00 00 00 00 00 00 00 00 00 00 00 00 00 00 00 00 -- 02DAA0
00 00 00 00 00 00 00 00 00 00 00 00 00 00 00 00 -- 02DAB0
00 00 00 00 00 00 00 00 00 00 00 00 00 00 00 00 -- 02DAC0
00 00 00 00 00 00 00 00 00 00 00 00 00 00 00 00 -- 02DAD0
00 00 00 00 00 00 00 00 00 00 00 00 00 00 00 00 -- 02DAE0
00 00 00 00 00 00 00 00 00 00 00 00 00 00 00 00 -- 02DAF0
00 00 00 00 00 00 00 00 00 00 00 00 00 00 00 00 -- 02DB00
00 00 00 00 00 00 00 00 00 00 00 00 00 00 00 00 -- 02DB10
00 00 00 00 00 00 00 00 00 00 00 00 00 00 00 00 -- 02DB20
00 00 00 00 00 00 00 00 00 00 00 00 00 00 00 00 -- 02DB30
00 00 00 00 00 00 00 00 00 00 00 00 00 00 00 00 -- 02DB40
00 00 00 00 00 00 00 00 00 00 00 00 00 00 00 00 -- 02DB50
00 00 00 00 00 00 00 00 00 00 00 00 00 00 00 00 -- 02DB60
00 00 00 00 00 00 00 00 00 00 00 00 00 00 00 00 -- 02DB70
00 00 00 00 00 00 00 00 00 00 00 00 00 00 00 00 -- 02DB80
00 00 00 00 00 00 00 00 00 00 00 00 00 00 00 00 -- 02DB90
00 00 00 00 00 00 00 00 00 00 00 00 00 00 00 00 -- 02DBA0
00 00 00 00 00 00 00 00 00 00 00 00 00 00 00 00 -- 02DBB0
00 00 00 00 00 00 00 00 00 00 00 00 00 00 00 00 -- 02DBC0
00 00 00 00 00 00 00 00 00 00 00 00 00 00 00 00 -- 02DBD0
00 00 00 00 00 00 00 00 00 00 00 00 00 00 00 00 -- 02DBE0
00 00 00 00 00 00 00 00 00 00 00 00 00 00 00 00 -- 02DBF0
00 00 00 00 00 00 00 00 00 00 00 00 00 00 01 FE -- 02DC00
00 00 00 00 00 00 00 00 00 00 00 00 00 00 00 00 -- 02DC10
00 00 00 00 00 00 00 00 00 00 00 00 00 00 00 00 -- 02DC20
00 00 00 00 00 00 00 00 00 00 00 00 00 00 00 00 -- 02DC30

00 00 00 00 00 00 00 00 00 00 00 00 00 00 00 00 -- 02DC40
00 00 00 00 00 00 00 00 00 00 00 00 00 00 00 00 -- 02DC50
00 00 00 00 00 00 00 00 00 00 00 00 00 00 00 00 -- 02DC60
00 00 00 00 00 00 00 00 00 00 00 00 00 00 00 00 -- 02DC70
00 00 00 00 00 00 00 00 00 00 00 00 00 00 00 00 -- 02DC80
00 00 00 00 00 00 00 00 00 00 00 00 00 00 00 00 -- 02DC90
00 00 00 00 00 00 00 00 00 00 00 00 00 00 00 00 -- 02DCA0
00 00 00 00 00 00 00 00 00 00 00 00 00 00 00 00 -- 02DCB0
00 00 00 00 00 00 00 00 00 00 00 00 00 00 00 00 -- 02DCC0
00 00 00 00 00 00 00 00 00 00 00 00 00 00 00 00 -- 02DCD0
00 00 00 00 00 00 00 00 00 00 00 00 00 00 00 00 -- 02DCE0
00 00 00 00 00 00 00 00 00 00 00 00 00 00 00 00 -- 02DCF0
00 00 00 00 00 00 00 00 00 00 00 00 00 00 00 00 -- 02DD00
00 00 00 00 00 00 00 00 00 00 00 00 00 00 00 00 -- 02DD10
00 00 00 00 00 00 00 00 00 00 00 00 00 00 00 00 -- 02DD20
00 00 00 00 00 00 00 00 00 00 00 00 00 00 00 00 -- 02DD30
00 00 00 00 00 00 00 00 00 00 00 00 00 00 00 00 -- 02DD40
00 00 00 00 00 00 00 00 00 00 00 00 00 00 00 00 -- 02DD50
00 00 00 00 00 00 00 00 00 00 00 00 00 00 00 00 -- 02DD60
00 00 00 00 00 00 00 00 00 00 00 00 00 00 00 00 -- 02DD70
00 00 00 00 00 00 00 00 00 00 00 00 00 00 00 00 -- 02DD80
00 00 00 00 00 00 00 00 00 00 00 00 00 00 00 00 -- 02DD90
```

```
00 00 00 00 00 00 00 00 00 00 00 00 00 00 00 00 -- 02DDA0
00 00 00 00 00 00 00 00 00 00 00 00 00 00 00 00 -- 02DDB0
00 00 00 00 00 00 00 00 00 00 00 00 00 00 00 00 -- 02DDC0
00 00 00 00 00 00 00 00 00 00 00 00 00 00 00 00 -- 02DDD0
00 00 00 00 00 00 00 00 00 00 00 00 00 00 00 00 -- 02DDE0
00 00 00 00 00 00 00 00 00 00 00 00 00 00 00 00 -- 02DDF0
00 00 00 00 00 00 00 00 00 00 00 00 00 00 01 FE -- 02DE00
00 00 00 00 00 00 00 00 00 00 00 00 00 00 00 00 -- 02DE10
00 00 00 00 00 00 00 00 00 00 00 00 00 00 00 00 -- 02DE20
00 00 00 00 00 00 00 00 00 00 00 00 00 00 00 00 -- 02DE30
00 00 00 00 00 00 00 00 00 00 00 00 00 00 00 00 -- 02DE40
00 00 00 00 00 00 00 00 00 00 00 00 00 00 00 00 -- 02DE50
00 00 00 00 00 00 00 00 00 00 00 00 00 00 00 00 -- 02DE60
00 00 00 00 00 00 00 00 00 00 00 00 00 00 00 00 -- 02DE70
00 00 00 00 00 00 00 00 00 00 00 00 00 00 00 00 -- 02DE80
00 00 00 00 00 00 00 00 00 00 00 00 00 00 00 00 -- 02DE90
00 00 00 00 00 00 00 00 00 00 00 00 00 00 00 00 -- 02DEA0
00 00 00 00 00 00 00 00 00 00 00 00 00 00 00 00 -- 02DEB0
00 00 00 00 00 00 00 00 00 00 00 00 00 00 00 00 -- 02DEC0
00 00 00 00 00 00 00 00 00 00 00 00 00 00 00 00 -- 02DED0
00 00 00 00 00 00 00 00 00 00 00 00 00 00 00 00 -- 02DEE0
00 00 00 00 00 00 00 00 00 00 00 00 00 00 00 00 -- 02DEF0
00 00 00 00 00 00 00 00 00 00 00 00 00 00 00 00 -- 02DF00
00 00 00 00 00 00 00 00 00 00 00 00 00 00 00 00 -- 02DF10
00 00 00 00 00 00 00 00 00 00 00 00 00 00 00 00 -- 02DF20
00 00 00 00 00 00 00 00 00 00 00 00 00 00 00 00 -- 02DF30
00 00 00 00 00 00 00 00 00 00 00 00 00 00 00 00 -- 02DF40
00 00 00 00 00 00 00 00 00 00 00 00 00 00 00 00 -- 02DF50
00 00 00 00 00 00 00 00 00 00 00 00 00 00 00 00 -- 02DF60
00 00 00 00 00 00 00 00 00 00 00 00 00 00 00 00 -- 02DF70
00 00 00 00 00 00 00 00 00 00 00 00 00 00 00 00 -- 02DF80
00 00 00 00 00 00 00 00 00 00 00 00 00 00 00 00 -- 02DF90
00 00 00 00 00 00 00 00 00 00 00 00 00 00 00 00 -- 02DFA0
00 00 00 00 00 00 00 00 00 00 00 00 00 00 00 00 -- 02DFB0
00 00 00 00 00 00 00 00 00 00 00 00 00 00 00 00 -- 02DFC0
00 00 00 00 00 00 00 00 00 00 00 00 00 00 00 00 -- 02DFD0

00 00 00 00 00 00 00 00 00 00 00 00 00 00 00 00 -- 02DFE0
00 00 00 00 00 00 00 00 00 00 00 00 00 00 00 00 -- 02DFF0
00 00 00 00 00 00 00 00 00 00 00 00 00 00 01 FE -- 02E000
00 00 00 00 00 00 00 00 00 00 00 00 00 00 00 00 -- 02E010
00 00 00 00 00 00 00 00 00 00 00 00 00 00 00 00 -- 02E020
00 00 00 00 00 00 00 00 00 00 00 00 00 00 00 00 -- 02E030
00 00 00 00 00 00 00 00 00 00 00 00 00 00 00 00 -- 02E040
00 00 00 00 00 00 00 00 00 00 00 00 00 00 00 00 -- 02E050
00 00 00 00 00 00 00 00 00 00 00 00 00 00 00 00 -- 02E060
00 00 00 00 00 00 00 00 00 00 00 00 00 00 00 00 -- 02E070
00 00 00 00 00 00 00 00 00 00 00 00 00 00 00 00 -- 02E080
00 00 00 00 00 00 00 00 00 00 00 00 00 00 00 00 -- 02E090
00 00 00 00 00 00 00 00 00 00 00 00 00 00 00 00 -- 02E0A0
00 00 00 00 00 00 00 00 00 00 00 00 00 00 00 00 -- 02E0B0
00 00 00 00 00 00 00 00 00 00 00 00 00 00 00 00 -- 02E0C0
00 00 00 00 00 00 00 00 00 00 00 00 00 00 00 00 -- 02E0D0
00 00 00 00 00 00 00 00 00 00 00 00 00 00 00 00 -- 02E0E0
00 00 00 00 00 00 00 00 00 00 00 00 00 00 00 00 -- 02E0F0
00 00 00 00 00 00 00 00 00 00 00 00 00 00 00 00 -- 02E100
00 00 00 00 00 00 00 00 00 00 00 00 00 00 00 00 -- 02E110
00 00 00 00 00 00 00 00 00 00 00 00 00 00 00 00 -- 02E120
00 00 00 00 00 00 00 00 00 00 00 00 00 00 00 00 -- 02E130
00 00 00 00 00 00 00 00 00 00 00 00 00 00 00 00 -- 02E140
```

```
00  00  00  00  00  00  00  00  00  00  00  00  00  00  00  00  --  02E150
00  00  00  00  00  00  00  00  00  00  00  00  00  00  00  00  --  02E160
00  00  00  00  00  00  00  00  00  00  00  00  00  00  00  00  --  02E170
00  00  00  00  00  00  00  00  00  00  00  00  00  00  00  00  --  02E180
00  00  00  00  00  00  00  00  00  00  00  00  00  00  00  00  --  02E190
00  00  00  00  00  00  00  00  00  00  00  00  00  00  00  00  --  02E1A0
00  00  00  00  00  00  00  00  00  00  00  00  00  00  00  00  --  02E1B0
00  00  00  00  00  00  00  00  00  00  00  00  00  00  00  00  --  02E1C0
00  00  00  00  00  00  00  00  00  00  00  00  00  00  00  00  --  02E1D0
00  00  00  00  00  00  00  00  00  00  00  00  00  00  00  00  --  02E1E0
00  00  00  00  00  00  00  00  00  00  00  00  00  00  00  00  --  02E1F0
00  00  00  00  00  00  00  00  00  00  00  00  00  00  01  FE  --  02E200
00  00  00  00  00  00  00  00  00  00  00  00  00  00  00  00  --  02E210
00  00  00  00  00  00  00  00  00  00  00  00  00  00  00  00  --  02E220
00  00  00  00  00  00  00  00  00  00  00  00  00  00  00  00  --  02E230
00  00  00  00  00  00  00  00  00  00  00  00  00  00  00  00  --  02E240
00  00  00  00  00  00  00  00  00  00  00  00  00  00  00  00  --  02E250
00  00  00  00  00  00  00  00  00  00  00  00  00  00  00  00  --  02E260
00  00  00  00  00  00  00  00  00  00  00  00  00  00  00  00  --  02E270
00  00  00  00  00  00  00  00  00  00  00  00  00  00  00  00  --  02E280
00  00  00  00  00  00  00  00  00  00  00  00  00  00  00  00  --  02E290
00  00  00  00  00  00  00  00  00  00  00  00  00  00  00  00  --  02E2A0
00  00  00  00  00  00  00  00  00  00  00  00  00  00  00  00  --  02E2B0
00  00  00  00  00  00  00  00  00  00  00  00  00  00  00  00  --  02E2C0
00  00  00  00  00  00  00  00  00  00  00  00  00  00  00  00  --  02E2D0
00  00  00  00  00  00  00  00  00  00  00  00  00  00  00  00  --  02E2E0
00  00  00  00  00  00  00  00  00  00  00  00  00  00  00  00  --  02E2F0
00  00  00  00  00  00  00  00  00  00  00  00  00  00  00  00  --  02E300
00  00  00  00  00  00  00  00  00  00  00  00  00  00  00  00  --  02E310
00  00  00  00  00  00  00  00  00  00  00  00  00  00  00  00  --  02E320
00  00  00  00  00  00  00  00  00  00  00  00  00  00  00  00  --  02E330
00  00  00  00  00  00  00  00  00  00  00  00  00  00  00  00  --  02E340
00  00  00  00  00  00  00  00  00  00  00  00  00  00  00  00  --  02E350
00  00  00  00  00  00  00  00  00  00  00  00  00  00  00  00  --  02E360
00  00  00  00  00  00  00  00  00  00  00  00  00  00  00  00  --  02E370

00  00  00  00  00  00  00  00  00  00  00  00  00  00  00  00  --  02E380
00  00  00  00  00  00  00  00  00  00  00  00  00  00  00  00  --  02E390
00  00  00  00  00  00  00  00  00  00  00  00  00  00  00  00  --  02E3A0
00  00  00  00  00  00  00  00  00  00  00  00  00  00  00  00  --  02E3B0
00  00  00  00  00  00  00  00  00  00  00  00  00  00  00  00  --  02E3C0
00  00  00  00  00  00  00  00  00  00  00  00  00  00  00  00  --  02E3D0
00  00  00  00  00  00  00  00  00  00  00  00  00  00  00  00  --  02E3E0
00  00  00  00  00  00  00  00  00  00  00  00  00  00  00  00  --  02E3F0
00  00  00  00  00  00  00  00  00  00  00  00  00  00  01  FE  --  02E400
00  00  00  00  00  00  00  00  00  00  00  00  00  00  00  00  --  02E410
00  00  00  00  00  00  00  00  00  00  00  00  00  00  00  00  --  02E420
00  00  00  00  00  00  00  00  00  00  00  00  00  00  00  00  --  02E430
00  00  00  00  00  00  00  00  00  00  00  00  00  00  00  00  --  02E440
00  00  00  00  00  00  00  00  00  00  00  00  00  00  00  00  --  02E450
00  00  00  00  00  00  00  00  00  00  00  00  00  00  00  00  --  02E460
00  00  00  00  00  00  00  00  00  00  00  00  00  00  00  00  --  02E470
00  00  00  00  00  00  00  00  00  00  00  00  00  00  00  00  --  02E480
00  00  00  00  00  00  00  00  00  00  00  00  00  00  00  00  --  02E490
00  00  00  00  00  00  00  00  00  00  00  00  00  00  00  00  --  02E4A0
00  00  00  00  00  00  00  00  00  00  00  00  00  00  00  00  --  02E4B0
00  00  00  00  00  00  00  00  00  00  00  00  00  00  00  00  --  02E4C0
00  00  00  00  00  00  00  00  00  00  00  00  00  00  00  00  --  02E4D0
00  00  00  00  00  00  00  00  00  00  00  00  00  00  00  00  --  02E4E0
00  00  00  00  00  00  00  00  00  00  00  00  00  00  00  00  --  02E4F0
```

```
00 00 00 00 00 00 00 00 00 00 00 00 00 00 00 00 -- 02E500
00 00 00 00 00 00 00 00 00 00 00 00 00 00 00 00 -- 02E510
00 00 00 00 00 00 00 00 00 00 00 00 00 00 00 00 -- 02E520
00 00 00 00 00 00 00 00 00 00 00 00 00 00 00 00 -- 02E530
00 00 00 00 00 00 00 00 00 00 00 00 00 00 00 00 -- 02E540
00 00 00 00 00 00 00 00 00 00 00 00 00 00 00 00 -- 02E550
00 00 00 00 00 00 00 00 00 00 00 00 00 00 00 00 -- 02E560
00 00 00 00 00 00 00 00 00 00 00 00 00 00 00 00 -- 02E570
00 00 00 00 00 00 00 00 00 00 00 00 00 00 00 00 -- 02E580
00 00 00 00 00 00 00 00 00 00 00 00 00 00 00 00 -- 02E590
00 00 00 00 00 00 00 00 00 00 00 00 00 00 00 00 -- 02E5A0
00 00 00 00 00 00 00 00 00 00 00 00 00 00 00 00 -- 02E5B0
00 00 00 00 00 00 00 00 00 00 00 00 00 00 00 00 -- 02E5C0
00 00 00 00 00 00 00 00 00 00 00 00 00 00 00 00 -- 02E5D0
00 00 00 00 00 00 00 00 00 00 00 00 00 00 00 00 -- 02E5E0
00 00 00 00 00 00 00 00 00 00 00 00 00 00 00 00 -- 02E5F0
00 00 00 00 00 00 00 00 00 00 00 00 00 00 01 FE -- 02E600
00 00 00 00 00 00 00 00 00 00 00 00 00 00 00 00 -- 02E610
00 00 00 00 00 00 00 00 00 00 00 00 00 00 00 00 -- 02E620
00 00 00 00 00 00 00 00 00 00 00 00 00 00 00 00 -- 02E630
00 00 00 00 00 00 00 00 00 00 00 00 00 00 00 00 -- 02E640
00 00 00 00 00 00 00 00 00 00 00 00 00 00 00 00 -- 02E650
00 00 00 00 00 00 00 00 00 00 00 00 00 00 00 00 -- 02E660
00 00 00 00 00 00 00 00 00 00 00 00 00 00 00 00 -- 02E670
00 00 00 00 00 00 00 00 00 00 00 00 00 00 00 00 -- 02E680
00 00 00 00 00 00 00 00 00 00 00 00 00 00 00 00 -- 02E690
00 00 00 00 00 00 00 00 00 00 00 00 00 00 00 00 -- 02E6A0
00 00 00 00 00 00 00 00 00 00 00 00 00 00 00 00 -- 02E6B0
00 00 00 00 00 00 00 00 00 00 00 00 00 00 00 00 -- 02E6C0
00 00 00 00 00 00 00 00 00 00 00 00 00 00 00 00 -- 02E6D0
00 00 00 00 00 00 00 00 00 00 00 00 00 00 00 00 -- 02E6E0
00 00 00 00 00 00 00 00 00 00 00 00 00 00 00 00 -- 02E6F0
00 00 00 00 00 00 00 00 00 00 00 00 00 00 00 00 -- 02E700
00 00 00 00 00 00 00 00 00 00 00 00 00 00 00 00 -- 02E710

00 00 00 00 00 00 00 00 00 00 00 00 00 00 00 00 -- 02E720
00 00 00 00 00 00 00 00 00 00 00 00 00 00 00 00 -- 02E730
00 00 00 00 00 00 00 00 00 00 00 00 00 00 00 00 -- 02E740
00 00 00 00 00 00 00 00 00 00 00 00 00 00 00 00 -- 02E750
00 00 00 00 00 00 00 00 00 00 00 00 00 00 00 00 -- 02E760
00 00 00 00 00 00 00 00 00 00 00 00 00 00 00 00 -- 02E770
00 00 00 00 00 00 00 00 00 00 00 00 00 00 00 00 -- 02E780
00 00 00 00 00 00 00 00 00 00 00 00 00 00 00 00 -- 02E790
00 00 00 00 00 00 00 00 00 00 00 00 00 00 00 00 -- 02E7A0
00 00 00 00 00 00 00 00 00 00 00 00 00 00 00 00 -- 02E7B0
00 00 00 00 00 00 00 00 00 00 00 00 00 00 00 00 -- 02E7C0
00 00 00 00 00 00 00 00 00 00 00 00 00 00 00 00 -- 02E7D0
00 00 00 00 00 00 00 00 00 00 00 00 00 00 00 00 -- 02E7E0
00 00 00 00 00 00 00 00 00 00 00 00 00 00 00 00 -- 02E7F0
00 00 00 00 00 00 00 00 00 00 00 00 00 00 01 FE -- 02E800
00 00 00 00 00 00 00 00 00 00 00 00 00 00 00 00 -- 02E810
00 00 00 00 00 00 00 00 00 00 00 00 00 00 00 00 -- 02E820
00 00 00 00 00 00 00 00 00 00 00 00 00 00 00 00 -- 02E830
00 00 00 00 00 00 00 00 00 00 00 00 00 00 00 00 -- 02E840
00 00 00 00 00 00 00 00 00 00 00 00 00 00 00 00 -- 02E850
00 00 00 00 00 00 00 00 00 00 00 00 00 00 00 00 -- 02E860
00 00 00 00 00 00 00 00 00 00 00 00 00 00 00 00 -- 02E870
00 00 00 00 00 00 00 00 00 00 00 00 00 00 00 00 -- 02E880
00 00 00 00 00 00 00 00 00 00 00 00 00 00 00 00 -- 02E890
00 00 00 00 00 00 00 00 00 00 00 00 00 00 00 00 -- 02E8A0
```

```
00 00 00 00 00 00 00 00 00 00 00 00 00 00 00 00 -- 02E8B0
00 00 00 00 00 00 00 00 00 00 00 00 00 00 00 00 -- 02E8C0
00 00 00 00 00 00 00 00 00 00 00 00 00 00 00 00 -- 02E8D0
00 00 00 00 00 00 00 00 00 00 00 00 00 00 00 00 -- 02E8E0
00 00 00 00 00 00 00 00 00 00 00 00 00 00 00 00 -- 02E8F0
00 00 00 00 00 00 00 00 00 00 00 00 00 00 00 00 -- 02E900
00 00 00 00 00 00 00 00 00 00 00 00 00 00 00 00 -- 02E910
00 00 00 00 00 00 00 00 00 00 00 00 00 00 00 00 -- 02E920
00 00 00 00 00 00 00 00 00 00 00 00 00 00 00 00 -- 02E930
00 00 00 00 00 00 00 00 00 00 00 00 00 00 00 00 -- 02E940
00 00 00 00 00 00 00 00 00 00 00 00 00 00 00 00 -- 02E950
00 00 00 00 00 00 00 00 00 00 00 00 00 00 00 00 -- 02E960
00 00 00 00 00 00 00 00 00 00 00 00 00 00 00 00 -- 02E970
00 00 00 00 00 00 00 00 00 00 00 00 00 00 00 00 -- 02E980
00 00 00 00 00 00 00 00 00 00 00 00 00 00 00 00 -- 02E990
00 00 00 00 00 00 00 00 00 00 00 00 00 00 00 00 -- 02E9A0
00 00 00 00 00 00 00 00 00 00 00 00 00 00 00 00 -- 02E9B0
00 00 00 00 00 00 00 00 00 00 00 00 00 00 00 00 -- 02E9C0
00 00 00 00 00 00 00 00 00 00 00 00 00 00 00 00 -- 02E9D0
00 00 00 00 00 00 00 00 00 00 00 00 00 00 00 00 -- 02E9E0
00 00 00 00 00 00 00 00 00 00 00 00 00 00 00 00 -- 02E9F0
00 00 00 00 00 00 00 00 00 00 00 00 00 00 01 FE -- 02EA00
00 00 00 00 00 00 00 00 00 00 00 00 00 00 00 00 -- 02EA10
00 00 00 00 00 00 00 00 00 00 00 00 00 00 00 00 -- 02EA20
00 00 00 00 00 00 00 00 00 00 00 00 00 00 00 00 -- 02EA30
00 00 00 00 00 00 00 00 00 00 00 00 00 00 00 00 -- 02EA40
00 00 00 00 00 00 00 00 00 00 00 00 00 00 00 00 -- 02EA50
00 00 00 00 00 00 00 00 00 00 00 00 00 00 00 00 -- 02EA60
00 00 00 00 00 00 00 00 00 00 00 00 00 00 00 00 -- 02EA70
00 00 00 00 00 00 00 00 00 00 00 00 00 00 00 00 -- 02EA80
00 00 00 00 00 00 00 00 00 00 00 00 00 00 00 00 -- 02EA90
00 00 00 00 00 00 00 00 00 00 00 00 00 00 00 00 -- 02EAA0
00 00 00 00 00 00 00 00 00 00 00 00 00 00 00 00 -- 02EAB0

00 00 00 00 00 00 00 00 00 00 00 00 00 00 00 00 -- 02EAC0
00 00 00 00 00 00 00 00 00 00 00 00 00 00 00 00 -- 02EAD0
00 00 00 00 00 00 00 00 00 00 00 00 00 00 00 00 -- 02EAE0
00 00 00 00 00 00 00 00 00 00 00 00 00 00 00 00 -- 02EAF0
00 00 00 00 00 00 00 00 00 00 00 00 00 00 00 00 -- 02EB00
00 00 00 00 00 00 00 00 00 00 00 00 00 00 00 00 -- 02EB10
00 00 00 00 00 00 00 00 00 00 00 00 00 00 00 00 -- 02EB20
00 00 00 00 00 00 00 00 00 00 00 00 00 00 00 00 -- 02EB30
00 00 00 00 00 00 00 00 00 00 00 00 00 00 00 00 -- 02EB40
00 00 00 00 00 00 62 72 00 00 00 00 00 00 00 00 -- 02EB50
00 00 00 00 00 00 00 00 00 00 00 00 00 00 00 00 -- 02EB60
00 00 00 00 00 00 00 00 00 00 00 00 00 00 00 00 -- 02EB70
00 00 00 00 00 00 00 00 00 00 00 00 00 00 00 00 -- 02EB80
00 00 00 00 00 00 00 00 00 00 00 00 00 00 00 00 -- 02EB90
00 00 00 00 00 00 00 00 00 00 00 00 00 00 00 00 -- 02EBA0
00 00 00 00 00 00 00 00 00 00 00 00 00 00 00 00 -- 02EBB0
00 00 00 00 00 00 00 00 00 00 00 00 00 00 00 00 -- 02EBC0
00 00 00 00 00 00 00 00 00 00 00 00 00 00 00 00 -- 02EBD0
00 00 00 00 00 00 00 00 00 00 00 00 00 00 00 00 -- 02EBE0
00 00 00 00 00 00 00 00 00 00 00 00 00 00 00 00 -- 02EBF0
00 00 00 00 00 00 00 00 00 00 00 00 00 00 01 FE -- 02EC00
00 00 00 00 00 00 00 00 00 00 00 00 00 00 00 00 -- 02EC10
00 00 00 00 00 00 00 00 00 00 00 00 00 00 00 00 -- 02EC20
00 00 00 00 00 00 00 00 00 00 00 00 00 00 00 00 -- 02EC30
00 00 00 00 00 00 00 00 00 00 00 00 00 00 00 00 -- 02EC40
00 00 00 00 00 00 00 00 00 00 00 00 00 00 00 00 -- 02EC50
```

```
00  00  00  00  00  00  00  00  00  00  00  00  00  00  00  00  --  02EC60
00  00  00  00  00  00  00  00  00  00  00  00  00  00  00  00  --  02EC70
00  00  00  00  00  00  00  00  00  00  00  00  00  00  00  00  --  02EC80
00  00  00  00  00  00  00  00  00  00  00  00  00  00  00  00  --  02EC90
00  00  00  00  00  00  00  00  00  00  00  00  00  00  00  00  --  02ECA0
00  00  00  00  00  00  00  00  00  00  00  00  00  00  00  00  --  02ECB0
00  00  00  00  00  00  00  00  00  00  00  00  00  00  00  00  --  02ECC0
00  00  00  00  00  00  00  00  00  00  00  00  00  00  00  00  --  02ECD0
00  00  00  00  00  00  00  00  00  00  00  00  00  00  00  00  --  02ECE0
00  00  00  00  00  00  00  00  00  00  00  00  00  00  00  00  --  02ECF0
00  00  00  00  00  00  00  00  00  00  00  00  00  00  00  00  --  02ED00
00  00  00  00  00  00  00  00  00  00  00  00  00  00  00  00  --  02ED10
00  00  00  00  00  00  00  00  00  00  00  00  00  00  00  00  --  02ED20
00  00  00  00  00  00  00  00  00  00  00  00  00  00  00  00  --  02ED30
00  00  00  00  00  00  00  00  00  00  00  00  00  00  00  00  --  02ED40
00  00  00  00  00  00  00  00  00  00  00  00  00  00  00  00  --  02ED50
00  00  00  00  00  00  00  00  00  00  00  00  00  00  00  00  --  02ED60
00  00  00  00  00  00  00  00  00  00  00  00  00  00  00  00  --  02ED70
00  00  00  00  00  00  00  00  00  00  00  00  00  00  00  00  --  02ED80
00  00  00  00  00  00  00  00  00  00  00  00  00  00  00  00  --  02ED90
00  00  00  00  00  00  00  00  00  00  00  00  00  00  00  00  --  02EDA0
00  00  00  00  00  00  00  00  00  00  00  00  00  00  00  00  --  02EDB0
00  00  00  00  00  00  00  00  00  00  00  00  00  00  00  00  --  02EDC0
00  00  00  00  00  00  00  00  00  00  00  00  00  00  00  00  --  02EDD0
00  00  00  00  00  00  00  00  00  00  00  00  00  00  00  00  --  02EDE0
00  00  00  00  00  00  00  00  00  00  00  00  00  00  00  00  --  02EDF0
00  00  00  00  00  00  00  00  00  00  00  00  00  00  01  FE  --  02EE00
00  00  00  00  00  00  00  00  00  00  00  00  00  00  00  00  --  02EE10
00  00  00  00  00  00  00  00  00  00  00  00  00  00  00  00  --  02EE20
00  00  00  00  00  00  00  00  00  00  00  00  00  00  00  00  --  02EE30
00  00  00  00  00  00  00  00  00  00  00  00  00  00  00  00  --  02EE40
00  00  00  00  00  00  00  00  00  00  00  00  00  00  00  00  --  02EE50

00  00  00  00  00  00  00  00  00  00  00  00  00  00  00  00  --  02EE60
00  00  00  00  00  00  00  00  00  00  00  00  00  00  00  00  --  02EE70
00  00  00  00  00  00  00  00  00  00  00  00  00  00  00  00  --  02EE80
00  00  00  00  00  00  00  00  00  00  00  00  00  00  00  00  --  02EE90
00  00  00  00  00  00  00  00  00  00  00  00  00  00  00  00  --  02EEA0
00  00  00  00  00  00  00  00  00  00  00  00  00  00  00  00  --  02EEB0
00  00  00  00  00  00  00  00  00  00  00  00  00  00  00  00  --  02EEC0
00  00  00  00  00  00  00  00  00  00  00  00  00  00  00  00  --  02EED0
00  00  00  00  00  00  00  00  00  00  00  00  00  00  00  00  --  02EEE0
00  00  00  00  00  00  00  00  00  00  00  00  00  00  00  00  --  02EEF0
00  00  00  00  00  00  00  00  00  00  00  00  00  00  00  00  --  02EF00
00  00  00  00  00  00  00  00  00  00  00  00  00  00  00  00  --  02EF10
00  00  00  00  00  00  00  00  00  00  00  00  00  00  00  00  --  02EF20
00  00  00  00  00  00  00  00  00  00  00  00  00  00  00  00  --  02EF30
00  00  00  00  00  00  00  00  00  00  00  00  00  00  00  00  --  02EF40
00  00  00  00  00  00  00  00  00  00  00  00  00  00  00  00  --  02EF50
00  00  00  00  00  00  00  00  00  00  00  00  00  00  00  00  --  02EF60
00  00  00  00  00  00  00  00  00  00  00  00  00  00  00  00  --  02EF70
00  00  00  00  00  00  00  00  00  00  00  00  00  00  00  00  --  02EF80
00  00  00  00  00  00  00  00  00  00  00  00  00  00  00  00  --  02EF90
00  00  00  00  00  00  00  00  00  00  00  00  00  00  00  00  --  02EFA0
00  00  00  00  00  00  00  00  00  00  00  00  00  00  00  00  --  02EFB0
00  00  00  00  00  00  00  00  00  00  00  00  00  00  00  00  --  02EFC0
00  00  00  00  00  00  00  00  00  00  00  00  00  00  00  00  --  02EFD0
00  00  00  00  00  00  00  00  00  00  00  00  00  00  00  00  --  02EFE0
00  00  00  00  00  00  00  00  00  00  00  00  00  00  00  00  --  02EFF0
00  00  00  00  00  00  00  00  00  00  00  00  00  00  01  FE  --  02F000
```

214

```
00 00 00 00 00 00 00 00 00 00 00 00 00 00 00 00 -- 02F010
00 00 00 00 00 00 00 00 00 00 00 00 00 00 00 00 -- 02F020
00 00 00 00 00 00 00 00 00 00 00 00 00 00 00 00 -- 02F030
00 00 00 00 00 00 00 00 00 00 00 00 00 00 00 00 -- 02F040
00 00 00 00 00 00 00 00 00 00 00 00 00 00 00 00 -- 02F050
00 00 00 00 00 00 00 00 00 00 00 00 00 00 00 00 -- 02F060
00 00 00 00 00 00 00 00 00 00 00 00 00 00 00 00 -- 02F070
00 00 00 00 00 00 00 00 00 00 00 00 00 00 00 00 -- 02F080
00 00 00 00 00 00 00 00 00 00 00 00 00 00 00 00 -- 02F090
00 00 00 00 00 00 00 00 00 00 00 00 00 00 00 00 -- 02F0A0
00 00 00 00 00 00 00 00 00 00 00 00 00 00 00 00 -- 02F0B0
00 00 00 00 00 00 00 00 00 00 00 00 00 00 00 00 -- 02F0C0
00 00 00 00 00 00 00 00 00 00 00 00 00 00 00 00 -- 02F0D0
00 00 00 00 00 00 00 00 00 00 00 00 00 00 00 00 -- 02F0E0
00 00 00 00 00 00 00 00 00 00 00 00 00 00 00 00 -- 02F0F0
00 00 00 00 00 00 00 00 00 00 00 00 00 00 00 00 -- 02F100
00 00 00 00 00 00 00 00 00 00 00 00 00 00 00 00 -- 02F110
00 00 00 00 00 00 00 00 00 00 00 00 00 00 00 00 -- 02F120
00 00 00 00 00 00 00 00 00 00 00 00 00 00 00 00 -- 02F130
00 00 00 00 00 00 00 00 00 00 00 00 00 00 00 00 -- 02F140
00 00 00 00 00 00 00 00 00 00 00 00 00 00 00 00 -- 02F150
00 00 00 00 00 00 00 00 00 00 00 00 00 00 00 00 -- 02F160
00 00 00 00 00 00 00 00 00 00 00 00 00 00 00 00 -- 02F170
00 00 00 00 00 00 00 00 00 00 00 00 00 00 00 00 -- 02F180
00 00 00 00 00 00 00 00 00 00 00 00 00 00 00 00 -- 02F190
00 00 00 00 00 00 00 00 00 00 00 00 00 00 00 00 -- 02F1A0
00 00 00 00 00 00 00 00 00 00 00 00 00 00 00 00 -- 02F1B0
00 00 00 00 00 00 00 00 00 00 00 00 00 00 00 00 -- 02F1C0
00 00 00 00 00 00 00 00 00 00 00 00 00 00 00 00 -- 02F1D0
00 00 00 00 00 00 00 00 00 00 00 00 00 00 00 00 -- 02F1E0
00 00 00 00 00 00 00 00 00 00 00 00 00 00 00 00 -- 02F1F0

00 00 00 00 00 00 00 00 00 00 00 00 00 00 01 FE -- 02F200
00 00 00 00 00 00 00 00 00 00 00 00 00 00 00 00 -- 02F210
00 00 00 00 00 00 00 00 00 00 00 00 00 00 00 00 -- 02F220
00 00 00 00 00 00 00 00 00 00 00 00 00 00 00 00 -- 02F230
00 00 00 00 00 00 00 00 00 00 00 00 00 00 00 00 -- 02F240
00 00 00 00 00 00 00 00 00 00 00 00 00 00 00 00 -- 02F250
00 00 00 00 00 00 00 00 00 00 00 00 00 00 00 00 -- 02F260
00 00 00 00 00 00 00 00 00 00 00 00 00 00 00 00 -- 02F270
00 00 00 00 00 00 00 00 00 00 00 00 00 00 00 00 -- 02F280
00 00 00 00 00 00 00 00 00 00 00 00 00 00 00 00 -- 02F290
00 00 00 00 00 00 00 00 00 00 00 00 00 00 00 00 -- 02F2A0
00 00 00 00 00 00 00 00 00 00 00 00 00 00 00 00 -- 02F2B0
00 00 00 00 00 00 00 00 00 00 00 00 00 00 00 00 -- 02F2C0
00 00 00 00 00 00 00 00 00 00 00 00 00 00 00 00 -- 02F2D0
00 00 00 00 00 00 00 00 00 00 00 00 00 00 00 00 -- 02F2E0
00 00 00 00 00 00 00 00 00 00 00 00 00 00 00 00 -- 02F2F0
00 00 00 00 00 00 00 00 00 00 00 00 00 00 00 00 -- 02F300
00 00 00 00 00 00 00 00 00 00 00 00 00 00 00 00 -- 02F310
00 00 00 00 00 00 00 00 00 00 00 00 00 00 00 00 -- 02F320
00 00 00 00 00 00 00 00 00 00 00 00 00 00 00 00 -- 02F330
00 00 00 00 00 00 00 00 00 00 00 00 00 00 00 00 -- 02F340
00 00 00 00 00 00 00 00 00 00 00 00 00 00 00 00 -- 02F350
00 00 00 00 00 00 00 00 00 00 00 00 00 00 00 00 -- 02F360
00 00 00 00 00 00 00 00 00 00 00 00 00 00 00 00 -- 02F370
00 00 00 00 00 00 00 00 00 00 00 00 00 00 00 00 -- 02F380
00 00 00 00 00 00 00 00 00 00 00 00 00 00 00 00 -- 02F390
00 00 00 00 00 00 00 00 00 00 00 00 00 00 00 00 -- 02F3A0
00 00 00 00 00 00 00 00 00 00 00 00 00 00 00 00 -- 02F3B0
```

```
00 00 00 00 00 00 00 00 00 00 00 00 00 00 00 00 -- 02F3C0
00 00 00 00 00 00 00 00 00 00 00 00 00 00 00 00 -- 02F3D0
00 00 00 00 00 00 00 00 00 00 00 00 00 00 00 00 -- 02F3E0
00 00 00 00 00 00 00 00 00 00 00 00 00 00 00 00 -- 02F3F0
00 00 00 00 00 00 00 00 00 00 00 00 00 00 01 FE -- 02F400
00 00 00 00 00 00 00 00 00 00 00 00 00 00 00 00 -- 02F410
00 00 00 00 00 00 00 00 00 00 00 00 00 00 00 00 -- 02F420
00 00 00 00 00 00 00 00 00 00 00 00 00 00 00 00 -- 02F430
00 00 00 00 00 00 00 00 00 00 00 00 00 00 00 00 -- 02F440
00 00 00 00 00 00 00 00 00 00 00 00 00 00 00 00 -- 02F450
00 00 00 00 00 00 00 00 00 00 00 00 00 00 00 00 -- 02F460
00 00 00 00 00 00 00 00 00 00 00 00 00 00 00 00 -- 02F470
00 00 00 00 00 00 00 00 00 00 00 00 00 00 00 00 -- 02F480
00 00 00 00 00 00 00 00 00 00 00 00 00 00 00 00 -- 02F490
00 00 00 00 00 00 00 00 00 00 00 00 00 00 00 00 -- 02F4A0
00 00 00 00 00 00 00 00 00 00 00 00 00 00 00 00 -- 02F4B0
00 00 00 00 00 00 00 00 00 00 00 00 00 00 00 00 -- 02F4C0
00 00 00 00 00 00 00 00 00 00 00 00 00 00 00 00 -- 02F4D0
00 00 00 00 00 00 00 00 00 00 00 00 00 00 00 00 -- 02F4E0
00 00 00 00 00 00 00 00 00 00 00 00 00 00 00 00 -- 02F4F0
00 00 00 00 00 00 00 00 00 00 00 00 00 00 00 00 -- 02F500
00 00 00 00 00 00 00 00 00 00 00 00 00 00 00 00 -- 02F510
00 00 00 00 00 00 00 00 00 00 00 00 00 00 00 00 -- 02F520
00 00 00 00 00 00 00 00 00 00 00 00 00 00 00 00 -- 02F530
00 00 00 00 00 00 00 00 00 00 00 00 00 00 00 00 -- 02F540
00 00 00 00 00 00 00 00 00 00 00 00 00 00 00 00 -- 02F550
00 00 00 00 00 00 00 00 00 00 00 00 00 00 00 00 -- 02F560
00 00 00 00 00 00 00 00 00 00 00 00 00 00 00 00 -- 02F570
00 00 00 00 00 00 00 00 00 00 00 00 00 00 00 00 -- 02F580
00 00 00 00 00 00 00 00 00 00 00 00 00 00 00 00 -- 02F590

00 00 00 00 00 00 00 00 00 00 00 00 00 00 00 00 -- 02F5A0
00 00 00 00 00 00 00 00 00 00 00 00 00 00 00 00 -- 02F5B0
00 00 00 00 00 00 00 00 00 00 00 00 00 00 00 00 -- 02F5C0
00 00 00 00 00 00 00 00 00 00 00 00 00 00 00 00 -- 02F5D0
00 00 00 00 00 00 00 00 00 00 00 00 00 00 00 00 -- 02F5E0
00 00 00 00 00 00 00 00 00 00 00 00 00 00 00 00 -- 02F5F0
00 00 00 00 00 00 00 00 00 00 00 00 00 00 01 FE -- 02F600
00 00 00 00 00 00 00 00 00 00 00 00 00 00 00 00 -- 02F610
00 00 00 00 00 00 00 00 00 00 00 00 00 00 00 00 -- 02F620
00 00 00 00 00 00 00 00 00 00 00 00 00 00 00 00 -- 02F630
00 00 00 00 00 00 00 00 00 00 00 00 00 00 00 00 -- 02F640
00 00 00 00 00 00 00 00 00 00 00 00 00 00 00 00 -- 02F650
00 00 00 00 00 00 00 00 00 00 00 00 00 00 00 00 -- 02F660
00 00 00 00 00 00 00 00 00 00 00 00 00 00 00 00 -- 02F670
00 00 00 00 00 00 00 00 00 00 00 00 00 00 00 00 -- 02F680
00 00 00 00 00 00 00 00 00 00 00 00 00 00 00 00 -- 02F690
00 00 00 00 00 00 00 00 00 00 00 00 00 00 00 00 -- 02F6A0
00 00 00 00 00 00 00 00 00 00 00 00 00 00 00 00 -- 02F6B0
00 00 00 00 00 00 00 00 00 00 00 00 00 00 00 00 -- 02F6C0
00 00 00 00 00 00 00 00 00 00 00 00 00 00 00 00 -- 02F6D0
00 00 00 00 00 00 00 00 00 00 00 00 00 00 00 00 -- 02F6E0
00 00 00 00 00 00 00 00 00 00 00 00 00 00 00 00 -- 02F6F0
00 00 00 00 00 00 00 00 00 00 00 00 00 00 00 00 -- 02F700
00 00 00 00 00 00 00 00 00 00 00 00 00 00 00 00 -- 02F710
00 00 00 00 00 00 00 00 00 00 00 00 00 00 00 00 -- 02F720
00 00 00 00 00 00 00 00 00 00 00 00 00 00 00 00 -- 02F730
00 00 00 00 00 00 00 00 00 00 00 00 00 00 00 00 -- 02F740
00 00 00 00 00 00 00 00 00 00 00 00 00 00 00 00 -- 02F750
00 00 00 00 00 00 00 00 00 00 00 00 00 00 00 00 -- 02F760
```

```
00 00 00 00 00 00 00 00 00 00 00 00 00 00 00 00 -- 02F770
00 00 00 00 00 00 00 00 00 00 00 00 00 00 00 00 -- 02F780
00 00 00 00 00 00 00 00 00 00 00 00 00 00 00 00 -- 02F790
00 00 00 00 00 00 00 00 00 00 00 00 00 00 00 00 -- 02F7A0
00 00 00 00 00 00 00 00 00 00 00 00 00 00 00 00 -- 02F7B0
00 00 00 00 00 00 00 00 00 00 00 00 00 00 00 00 -- 02F7C0
00 00 00 00 00 00 00 00 00 00 00 00 00 00 00 00 -- 02F7D0
00 00 00 00 00 00 00 00 00 00 00 00 00 00 00 00 -- 02F7E0
00 00 00 00 00 00 00 00 00 00 00 00 00 00 00 00 -- 02F7F0
00 00 00 00 00 00 00 00 00 00 00 00 00 00 01 FE -- 02F800
00 00 00 00 00 00 00 00 00 00 00 00 00 00 00 00 -- 02F810
00 00 00 00 00 00 00 00 00 00 00 00 00 00 00 00 -- 02F820
00 00 00 00 00 00 00 00 00 00 00 00 00 00 00 00 -- 02F830
00 00 00 00 00 00 00 00 00 00 00 00 00 00 00 00 -- 02F840
00 00 00 00 00 00 00 00 00 00 00 00 00 00 00 00 -- 02F850
00 00 00 00 00 00 00 00 00 00 00 00 00 00 00 00 -- 02F860
00 00 00 00 00 00 00 00 00 00 00 00 00 00 00 00 -- 02F870
00 00 00 00 00 00 00 00 00 00 00 00 00 00 00 00 -- 02F880
00 00 00 00 00 00 00 00 00 00 00 00 00 00 00 00 -- 02F890
00 00 00 00 00 00 00 00 00 00 00 00 00 00 00 00 -- 02F8A0
00 00 00 00 00 00 00 00 00 00 00 00 00 00 00 00 -- 02F8B0
00 00 00 00 00 00 00 00 00 00 00 00 00 00 00 00 -- 02F8C0
00 00 00 00 00 00 00 00 00 00 00 00 00 00 00 00 -- 02F8D0
00 00 00 00 00 00 00 00 00 00 00 00 00 00 00 00 -- 02F8E0
00 00 00 00 00 00 00 00 00 00 00 00 00 00 00 00 -- 02F8F0
00 00 00 00 00 00 00 00 00 00 00 00 00 00 00 00 -- 02F900
00 00 00 00 00 00 00 00 00 00 00 00 00 00 00 00 -- 02F910
00 00 00 00 00 00 00 00 00 00 00 00 00 00 00 00 -- 02F920
00 00 00 00 00 00 00 00 00 00 00 00 00 00 00 00 -- 02F930

00 00 00 00 00 00 00 00 00 00 00 00 00 00 00 00 -- 02F940
00 00 00 00 00 00 00 00 00 00 00 00 00 00 00 00 -- 02F950
00 00 00 00 00 00 00 00 00 00 00 00 00 00 00 00 -- 02F960
00 00 00 00 00 00 00 00 00 00 00 00 00 00 00 00 -- 02F970
00 00 00 00 00 00 00 00 00 00 00 00 00 00 00 00 -- 02F980
00 00 00 00 00 00 00 00 00 00 00 00 00 00 00 00 -- 02F990
00 00 00 00 00 00 00 00 00 00 00 00 00 00 00 00 -- 02F9A0
00 00 00 00 00 00 00 00 00 00 00 00 00 00 00 00 -- 02F9B0
00 00 00 00 00 00 00 00 00 00 00 00 00 00 00 00 -- 02F9C0
00 00 00 00 00 00 00 00 00 00 00 00 00 00 00 00 -- 02F9D0
00 00 00 00 00 00 00 00 00 00 00 00 00 00 00 00 -- 02F9E0
00 00 00 00 00 00 00 00 00 00 00 00 00 00 00 00 -- 02F9F0
00 00 00 00 00 00 00 00 00 00 00 00 00 00 01 FE -- 02FA00
00 00 00 00 00 00 00 00 00 00 00 00 00 00 00 00 -- 02FA10
00 00 00 00 00 00 00 00 00 00 00 00 00 00 00 00 -- 02FA20
00 00 00 00 00 00 00 00 00 00 00 00 00 00 00 00 -- 02FA30
00 00 00 00 00 00 00 00 00 00 00 00 00 00 00 00 -- 02FA40
00 00 00 00 00 00 00 00 00 00 00 00 00 00 00 00 -- 02FA50
00 00 00 00 00 00 00 00 00 00 00 00 00 00 00 00 -- 02FA60
00 00 00 00 00 00 00 00 00 00 00 00 00 00 00 00 -- 02FA70
00 00 00 00 00 00 00 00 00 00 00 00 00 00 00 00 -- 02FA80
00 00 00 00 00 00 00 00 00 00 00 00 00 00 00 00 -- 02FA90
00 00 00 00 00 00 00 00 00 00 00 00 00 00 00 00 -- 02FAA0
00 00 00 00 00 00 00 00 00 00 00 00 00 00 00 00 -- 02FAB0
00 00 00 00 00 00 00 00 00 00 00 00 00 00 00 00 -- 02FAC0
00 00 00 00 00 00 00 00 00 00 00 00 00 00 00 00 -- 02FAD0
00 00 00 00 00 00 00 00 00 00 00 00 00 00 00 00 -- 02FAE0
00 00 00 00 00 00 00 00 00 00 00 00 00 00 00 00 -- 02FAF0
00 00 00 00 00 00 00 00 00 00 00 00 00 00 00 00 -- 02FB00
00 00 00 00 00 00 00 00 00 00 00 00 00 00 00 00 -- 02FB10
```

```
00  00  00  00  00  00  00  00  00  00  00  00  00  00  00  00  --  02FB20
00  00  00  00  00  00  00  00  00  00  00  00  00  00  00  00  --  02FB30
00  00  00  00  00  00  00  00  00  00  00  00  00  00  00  00  --  02FB40
00  00  00  00  00  00  00  00  00  00  00  00  00  00  00  00  --  02FB50
00  00  00  00  00  00  00  00  00  00  00  00  00  00  00  00  --  02FB60
00  00  00  00  00  00  00  00  00  00  00  00  00  00  00  00  --  02FB70
00  00  00  00  00  00  00  00  00  00  00  00  00  00  00  00  --  02FB80
00  00  00  00  00  00  00  00  00  00  00  00  00  00  00  00  --  02FB90
00  00  00  00  00  00  00  00  00  00  00  00  00  00  00  00  --  02FBA0
00  00  00  00  00  00  00  00  00  00  00  00  00  00  00  00  --  02FBB0
00  00  00  00  00  00  00  00  00  00  00  00  00  00  00  00  --  02FBC0
00  00  00  00  00  00  00  00  00  00  00  00  00  00  00  00  --  02FBD0
00  00  00  00  00  00  00  00  00  00  00  00  00  00  00  00  --  02FBE0
00  00  00  00  00  00  00  00  00  00  00  00  00  00  00  00  --  02FBF0
00  00  00  00  00  00  00  00  00  00  00  00  00  00  01  FE  --  02FC00
00  00  00  00  00  00  00  00  00  00  00  00  00  00  00  00  --  02FC10
00  00  00  00  00  00  00  00  00  00  00  00  00  00  00  00  --  02FC20
00  00  00  00  00  00  00  00  00  00  00  00  00  00  00  00  --  02FC30
00  00  00  00  00  00  00  00  00  00  00  00  00  00  00  00  --  02FC40
00  00  00  00  00  00  00  00  00  00  00  00  00  00  00  00  --  02FC50
00  00  00  00  00  00  00  00  00  00  00  00  00  00  00  00  --  02FC60
00  00  00  00  00  00  00  00  00  00  00  00  00  00  00  00  --  02FC70
00  00  00  00  00  00  00  00  00  00  00  00  00  00  00  00  --  02FC80
00  00  00  00  00  00  00  00  00  00  00  00  00  00  00  00  --  02FC90
00  00  00  00  00  00  00  00  00  00  00  00  00  00  00  00  --  02FCA0
00  00  00  00  00  00  00  00  00  00  00  00  00  00  00  00  --  02FCB0
00  00  00  00  00  00  00  00  00  00  00  00  00  00  00  00  --  02FCC0
00  00  00  00  00  00  00  00  00  00  00  00  00  00  00  00  --  02FCD0

00  00  00  00  00  00  00  00  00  00  00  00  00  00  00  00  --  02FCE0
00  00  00  00  00  00  00  00  00  00  00  00  00  00  00  00  --  02FCF0
00  00  00  00  00  00  00  00  00  00  00  00  00  00  00  00  --  02FD00
00  00  00  00  00  00  00  00  00  00  00  00  00  00  00  00  --  02FD10
00  00  00  00  00  00  00  00  00  00  00  00  00  00  00  00  --  02FD20
00  00  00  00  00  00  00  00  00  00  00  00  00  00  00  00  --  02FD30
00  00  00  00  00  00  00  00  00  00  00  00  00  00  00  00  --  02FD40
00  00  00  00  00  00  00  00  00  00  00  00  00  00  00  00  --  02FD50
00  00  00  00  00  00  00  00  00  00  00  00  00  00  00  00  --  02FD60
00  00  00  00  00  00  00  00  00  00  00  00  00  00  00  00  --  02FD70
00  00  00  00  00  00  00  00  00  00  00  00  00  00  00  00  --  02FD80
00  00  00  00  00  00  00  00  00  00  00  00  00  00  00  00  --  02FD90
00  00  00  00  00  00  00  00  00  00  00  00  00  00  00  00  --  02FDA0
00  00  00  00  00  00  00  00  00  00  00  00  00  00  00  00  --  02FDB0
00  00  00  00  00  00  00  00  00  00  00  00  00  00  00  00  --  02FDC0
00  00  00  00  00  00  00  00  00  00  00  00  00  00  00  00  --  02FDD0
00  00  00  00  00  00  00  00  00  00  00  00  00  00  00  00  --  02FDE0
00  00  00  00  00  00  00  00  00  00  00  00  00  00  00  00  --  02FDF0
00  00  00  00  00  00  00  00  00  00  00  00  00  00  01  FE  --  02FE00
00  00  00  00  00  00  00  00  00  00  00  00  00  00  00  00  --  02FE10
00  00  00  00  00  00  00  00  00  00  00  00  00  00  00  00  --  02FE20
00  00  00  00  00  00  00  00  00  00  00  00  00  00  00  00  --  02FE30
00  00  00  00  00  00  00  00  00  00  00  00  00  00  00  00  --  02FE40
00  00  00  00  00  00  00  00  00  00  00  00  00  00  00  00  --  02FE50
00  00  00  00  00  00  00  00  00  00  00  00  00  00  00  00  --  02FE60
00  00  00  00  00  00  00  00  00  00  00  00  00  00  00  00  --  02FE70
00  00  00  00  00  00  00  00  00  00  00  00  00  00  00  00  --  02FE80
00  00  00  00  00  00  00  00  00  00  00  00  00  00  00  00  --  02FE90
00  00  00  00  00  00  00  00  00  00  00  00  00  00  00  00  --  02FEA0
00  00  00  00  00  00  00  00  00  00  00  00  00  00  00  00  --  02FEB0
00  00  00  00  00  00  00  00  00  00  00  00  00  00  00  00  --  02FEC0
```

```
00 00 00 00 00 00 00 00 00 00 00 00 00 00 00 00 -- 02FED0
00 00 00 00 00 00 00 00 00 00 00 00 00 00 00 00 -- 02FEE0
00 00 00 00 00 00 00 00 00 00 00 00 00 00 00 00 -- 02FEF0
00 00 00 00 00 00 00 00 00 00 00 00 00 00 00 00 -- 02FF00
00 00 00 00 00 00 00 00 00 00 00 00 00 00 00 00 -- 02FF10
00 00 00 00 00 00 00 00 00 00 00 00 00 00 00 00 -- 02FF20
00 00 00 00 00 00 00 00 00 00 00 00 00 00 00 00 -- 02FF30
00 00 00 00 00 00 00 00 00 00 00 00 00 00 00 00 -- 02FF40
00 00 00 00 00 00 00 00 00 00 00 00 00 00 00 00 -- 02FF50
00 00 00 00 00 00 00 00 00 00 00 00 00 00 00 00 -- 02FF60
00 00 00 00 00 00 00 00 00 00 00 00 00 00 00 00 -- 02FF70
00 00 00 00 00 00 00 00 00 00 00 00 00 00 00 00 -- 02FF80
00 00 00 00 00 00 00 00 00 00 00 00 00 00 00 00 -- 02FF90
00 00 00 00 00 00 00 00 00 00 00 00 00 00 00 00 -- 02FFA0
00 00 00 00 00 00 00 00 00 00 00 00 00 00 00 00 -- 02FFB0
00 00 00 00 00 00 00 00 00 00 00 00 00 00 00 00 -- 02FFC0
00 00 00 00 00 00 00 00 00 00 00 00 00 00 00 00 -- 02FFD0
00 00 00 00 00 00 00 00 00 00 00 00 00 00 00 00 -- 02FFE0
00 00 00 00 00 00 00 00 00 00 00 00 00 00 00 00 -- 02FFF0
00 00 00 00 00 00 00 00 00 00 00 00 00 00 01 FE -- 030000
00 00 00 00 00 00 00 00 00 00 00 00 00 00 00 00 -- 030010
00 00 00 00 00 00 00 00 00 00 00 00 00 00 00 00 -- 030020
00 00 00 00 00 00 00 00 00 00 00 00 00 00 00 00 -- 030030
00 00 00 00 00 00 00 00 00 00 00 00 00 00 00 00 -- 030040
00 00 00 00 00 00 00 00 00 00 00 00 00 00 00 00 -- 030050
00 00 00 00 00 00 00 00 00 00 00 00 00 00 00 00 -- 030060
00 00 00 00 00 00 00 00 00 00 00 00 00 00 00 00 -- 030070

00 00 00 00 00 00 00 00 00 00 00 00 00 00 00 00 -- 030080
00 00 00 00 00 00 00 00 00 00 00 00 00 00 00 00 -- 030090
00 00 00 00 00 00 00 00 00 00 00 00 00 00 00 00 -- 0300A0
00 00 00 00 00 00 00 00 00 00 00 00 00 00 00 00 -- 0300B0
00 00 00 00 00 00 00 00 00 00 00 00 00 00 00 00 -- 0300C0
00 00 00 00 00 00 00 00 00 00 00 00 00 00 00 00 -- 0300D0
00 00 00 00 00 00 00 00 00 00 00 00 00 00 00 00 -- 0300E0
00 00 00 00 00 00 00 00 00 00 00 00 00 00 00 00 -- 0300F0
00 00 00 00 00 00 00 00 00 00 00 00 00 00 00 00 -- 030100
00 00 00 00 00 00 00 00 00 00 00 00 00 00 00 00 -- 030110
00 00 00 00 00 00 00 00 00 00 00 00 00 00 00 00 -- 030120
00 00 00 00 00 00 00 00 00 00 00 00 00 00 00 00 -- 030130
00 00 00 00 00 00 00 00 00 00 00 00 00 00 00 00 -- 030140
00 00 00 00 00 00 00 00 00 00 00 00 00 00 00 00 -- 030150
00 00 00 00 00 00 00 00 00 00 00 00 00 00 00 00 -- 030160
00 00 00 00 00 00 00 00 00 00 00 00 00 00 00 00 -- 030170
00 00 00 00 00 00 00 00 00 00 00 00 00 00 00 00 -- 030180
00 00 00 00 00 00 00 00 00 00 00 00 00 00 00 00 -- 030190
00 00 00 00 00 00 00 00 00 00 00 00 00 00 00 00 -- 0301A0
00 00 00 00 00 00 00 00 00 00 00 00 00 00 00 00 -- 0301B0
00 00 00 00 00 00 00 00 00 00 00 00 00 00 00 00 -- 0301C0
00 00 00 00 00 00 00 00 00 00 00 00 00 00 00 00 -- 0301D0
00 00 00 00 00 00 00 00 00 00 00 00 00 00 00 00 -- 0301E0
00 00 00 00 00 00 00 00 00 00 00 00 00 00 00 00 -- 0301F0
00 00 00 00 00 00 00 00 00 00 00 00 00 00 01 FE -- 030200
00 00 00 00 00 00 00 00 00 00 00 00 00 00 00 00 -- 030210
00 00 00 00 00 00 00 00 00 00 00 00 00 00 00 00 -- 030220
00 00 00 00 00 00 00 00 00 00 00 00 00 00 00 00 -- 030230
00 00 00 00 00 00 00 00 00 00 00 00 00 00 00 00 -- 030240
00 00 00 00 00 00 00 00 00 00 00 00 00 00 00 00 -- 030250
00 00 00 00 00 00 00 00 00 00 00 00 00 00 00 00 -- 030260
00 00 00 00 00 00 00 00 00 00 00 00 00 00 00 00 -- 030270
```

```
00 00 00 00 00 00 00 00 00 00 00 00 00 00 00 00 -- 030280
00 00 00 00 00 00 00 00 00 00 00 00 00 00 00 00 -- 030290
00 00 00 00 00 00 00 00 00 00 00 00 00 00 00 00 -- 0302A0
00 00 00 00 00 00 00 00 00 00 00 00 00 00 00 00 -- 0302B0
00 00 00 00 00 00 00 00 00 00 00 00 00 00 00 00 -- 0302C0
00 00 00 00 00 00 00 00 00 00 00 00 00 00 00 00 -- 0302D0
00 00 00 00 00 00 00 00 00 00 00 00 00 00 00 00 -- 0302E0
00 00 00 00 00 00 00 00 00 00 00 00 00 00 00 00 -- 0302F0
00 00 00 00 00 00 00 00 00 00 00 00 00 00 00 00 -- 030300
00 00 00 00 00 00 00 00 00 00 00 00 00 00 00 00 -- 030310
00 00 00 00 00 00 00 00 00 00 00 00 00 00 00 00 -- 030320
00 00 00 00 00 00 00 00 00 00 00 00 00 00 00 00 -- 030330
00 00 00 00 00 00 00 00 00 00 00 00 00 00 00 00 -- 030340
00 00 00 00 00 00 00 00 00 00 00 00 00 00 00 00 -- 030350
00 00 00 00 00 00 00 00 00 00 00 00 00 00 00 00 -- 030360
00 00 00 00 00 00 00 00 FF FF FF FF 00 00 00 00 -- 030370
00 00 20 76 20 20 20 20 00 00 00 00 02 A4 02 55 -- 030380
00 00 00 00 00 00 00 00 00 00 00 00 00 00 00 00 -- 030390
00 00 00 00 00 00 00 00 00 00 00 00 00 00 00 00 -- 0303A0
00 00 00 00 00 00 00 00 00 00 00 00 00 00 00 00 -- 0303B0
00 00 00 00 00 00 00 00 00 00 00 00 00 00 00 00 -- 0303C0
00 00 00 00 00 00 00 00 00 00 00 00 00 00 00 00 -- 0303D0
00 00 00 00 00 00 00 00 00 00 00 00 00 00 00 00 -- 0303E0
00 00 00 00 00 00 00 00 00 00 00 00 00 00 00 00 -- 0303F0
00 00 00 00 00 00 00 00 00 00 00 00 00 00 01 FE -- 030400
00 00 00 00 00 00 00 00 00 00 00 00 00 00 00 00 -- 030410

00 00 00 00 00 00 00 00 00 00 00 00 00 00 00 00 -- 030420
00 00 00 00 00 00 00 00 00 00 00 00 00 00 00 00 -- 030430
00 00 00 00 00 00 00 00 00 00 00 00 00 00 00 00 -- 030440
00 00 00 00 00 00 00 00 00 00 00 00 00 00 00 00 -- 030450
00 00 00 00 00 00 00 00 00 00 00 00 00 00 00 00 -- 030460
00 00 00 00 00 00 00 00 00 00 00 00 00 00 00 00 -- 030470
00 00 00 00 00 00 00 00 00 00 00 00 00 00 00 00 -- 030480
00 00 00 00 00 00 00 00 00 00 00 00 00 00 00 00 -- 030490
00 00 00 00 00 00 00 00 00 00 00 00 00 00 00 00 -- 0304A0
00 00 00 00 00 00 00 00 00 00 00 00 00 00 00 00 -- 0304B0
00 00 00 00 00 00 00 00 00 00 00 00 00 00 00 00 -- 0304C0
00 00 00 00 00 00 00 00 00 00 00 00 00 00 00 00 -- 0304D0
00 00 00 00 00 00 00 00 00 00 00 00 00 00 00 00 -- 0304E0
00 00 00 00 00 00 00 00 00 00 00 00 00 00 00 00 -- 0304F0
00 00 00 00 00 00 00 00 00 00 00 00 00 00 00 00 -- 030500
00 00 00 00 00 00 00 00 00 00 00 00 00 00 00 00 -- 030510
00 00 00 00 00 00 00 00 00 00 00 00 00 00 00 00 -- 030520
00 00 00 00 00 00 00 00 00 00 00 00 00 00 00 00 -- 030530
00 00 00 00 00 00 00 00 00 00 00 00 00 00 00 00 -- 030540
00 00 00 00 00 00 00 00 00 00 00 00 00 00 00 00 -- 030550
00 00 00 00 00 00 00 00 00 00 00 00 00 00 00 00 -- 030560
00 00 00 00 00 00 00 00 00 00 00 00 00 00 00 00 -- 030570
00 00 00 00 00 00 00 00 00 00 00 00 00 00 00 00 -- 030580
00 00 00 00 00 00 00 00 00 00 00 00 00 00 00 00 -- 030590
00 00 00 00 00 00 00 00 00 00 00 00 00 00 00 00 -- 0305A0
00 00 00 00 00 00 00 00 00 00 00 00 00 00 00 00 -- 0305B0
00 00 00 00 00 00 00 00 00 00 00 00 00 00 00 00 -- 0305C0
00 00 00 00 00 00 00 00 00 00 00 00 00 00 00 00 -- 0305D0
00 00 00 00 00 00 00 00 00 00 00 00 00 00 00 00 -- 0305E0
00 00 00 00 00 00 00 00 00 00 00 00 00 00 00 00 -- 0305F0
00 00 00 00 00 00 00 00 00 00 00 00 00 00 01 FE -- 030600
00 00 00 00 00 00 00 00 00 00 00 00 00 00 00 00 -- 030610
00 00 00 00 00 00 00 00 00 00 00 00 00 00 00 00 -- 030620
```

```
00 00 00 00 00 00 00 00 00 00 00 00 00 00 00 00 -- 030630
00 00 00 00 00 00 00 00 00 00 00 00 00 00 00 00 -- 030640
00 00 00 00 00 00 00 00 00 00 00 00 00 00 00 00 -- 030650
00 00 00 00 00 00 00 00 00 00 00 00 00 00 00 00 -- 030660
00 00 00 00 00 00 00 00 00 00 00 00 00 00 00 00 -- 030670
00 00 00 00 00 00 00 00 00 00 00 00 00 00 00 00 -- 030680
00 00 00 00 00 00 00 00 00 00 00 00 00 00 00 00 -- 030690
00 00 00 00 00 00 00 00 00 00 00 00 00 00 00 00 -- 0306A0
00 00 00 00 00 00 00 00 00 00 00 00 00 00 00 00 -- 0306B0
00 00 00 00 00 00 00 00 00 00 00 00 00 00 00 00 -- 0306C0
00 00 00 00 00 00 00 00 00 00 00 00 00 00 00 00 -- 0306D0
00 00 00 00 00 00 00 00 00 00 00 00 00 00 00 00 -- 0306E0
00 00 00 00 00 00 00 00 00 00 00 00 00 00 00 00 -- 0306F0
00 00 00 00 00 00 00 00 00 00 00 00 00 00 00 00 -- 030700
00 00 00 00 00 00 00 00 00 00 00 00 00 00 00 00 -- 030710
00 00 00 00 00 00 00 00 00 00 00 00 00 00 00 00 -- 030720
00 00 00 00 00 00 00 00 00 00 00 00 00 00 00 00 -- 030730
00 00 00 00 00 00 00 00 00 00 00 00 00 00 00 00 -- 030740
00 00 00 00 00 00 00 00 00 00 00 00 00 00 00 00 -- 030750
00 00 00 00 00 00 00 00 00 00 00 00 00 00 00 00 -- 030760
00 00 00 00 00 00 00 00 00 00 00 00 00 00 00 00 -- 030770
00 00 00 00 00 00 00 00 00 00 00 00 00 00 00 00 -- 030780
00 00 00 00 00 00 00 00 00 00 00 00 00 00 00 00 -- 030790
00 00 00 00 00 00 00 00 00 00 00 00 00 00 00 00 -- 0307A0
00 00 00 00 00 00 00 00 00 00 00 00 00 00 00 00 -- 0307B0

00 00 00 00 00 00 00 00 00 00 00 00 00 00 00 00 -- 0307C0
00 00 00 00 00 00 00 00 00 00 00 00 00 00 00 00 -- 0307D0
00 00 00 00 00 00 00 00 00 00 00 00 00 00 00 00 -- 0307E0
00 00 00 00 00 00 00 00 00 00 00 00 00 00 00 00 -- 0307F0
00 00 00 00 00 00 00 00 00 00 00 00 00 00 01 FE -- 030800
00 00 00 00 00 00 00 00 00 00 00 00 00 00 00 00 -- 030810
00 00 00 00 00 00 00 00 00 00 00 00 00 00 00 00 -- 030820
00 00 00 00 00 00 00 00 00 00 00 00 00 00 00 00 -- 030830
00 00 00 00 00 00 00 00 00 00 00 00 00 00 00 00 -- 030840
00 00 00 00 00 00 00 00 00 00 00 00 00 00 00 00 -- 030850
00 00 00 00 00 00 00 00 00 00 00 00 00 00 00 00 -- 030860
00 00 00 00 00 00 00 00 00 00 00 00 00 00 00 00 -- 030870
00 00 00 00 00 00 00 00 00 00 00 00 00 00 00 00 -- 030880
00 00 00 00 00 00 00 00 00 00 00 00 00 00 00 00 -- 030890
00 00 00 00 00 00 00 00 00 00 00 00 00 00 00 00 -- 0308A0
00 00 00 00 00 00 00 00 00 00 00 00 00 00 00 00 -- 0308B0
00 00 00 00 00 00 00 00 00 00 00 00 00 00 00 00 -- 0308C0
00 00 00 00 00 00 00 00 00 00 00 00 00 00 00 00 -- 0308D0
00 00 00 00 00 00 00 00 00 00 00 00 00 00 00 00 -- 0308E0
00 00 00 00 00 00 00 00 00 00 00 00 00 00 00 00 -- 0308F0
00 00 00 00 00 00 00 00 00 00 00 00 00 00 00 00 -- 030900
00 00 00 00 00 00 00 00 00 00 00 00 00 00 00 00 -- 030910
00 00 00 00 00 00 00 00 00 00 00 00 00 00 00 00 -- 030920
00 00 00 00 00 00 00 00 00 00 00 00 00 00 00 00 -- 030930
00 00 00 00 00 00 00 00 00 00 00 00 00 00 00 00 -- 030940
00 00 00 00 00 00 00 00 00 00 00 00 00 00 00 00 -- 030950
00 00 00 00 00 00 00 00 00 00 00 00 00 00 00 00 -- 030960
00 00 00 00 00 00 00 00 00 00 00 00 00 00 00 00 -- 030970
00 00 00 00 00 00 00 00 00 00 00 00 00 00 00 00 -- 030980
00 00 00 00 00 00 00 00 00 00 00 00 00 00 00 00 -- 030990
00 00 00 00 00 00 00 00 00 00 00 00 00 00 00 00 -- 0309A0
00 00 00 00 00 00 00 00 00 00 00 00 00 00 00 00 -- 0309B0
00 00 00 00 00 00 00 00 00 00 00 00 00 00 00 00 -- 0309C0
00 00 00 00 00 00 00 00 00 00 00 00 00 00 00 00 -- 0309D0
```

```
00 00 00 00 00 00 00 00 00 00 00 00 00 00 00 00 -- 0309E0
00 00 00 00 00 00 00 00 00 00 00 00 00 00 00 00 -- 0309F0
00 00 00 00 00 00 00 00 00 00 00 00 00 00 01 FE -- 030A00
00 00 00 00 00 00 00 00 00 00 00 00 00 00 00 00 -- 030A10
00 00 00 00 00 00 00 00 00 00 00 00 00 00 00 00 -- 030A20
00 00 00 00 00 00 00 00 00 00 00 00 00 00 00 00 -- 030A30
00 00 00 00 00 00 00 00 00 00 00 00 00 00 00 00 -- 030A40
00 00 00 00 00 00 00 00 00 00 00 00 00 00 00 00 -- 030A50
00 00 00 00 00 00 00 00 00 00 00 00 00 00 00 00 -- 030A60
00 00 00 00 00 00 00 00 00 00 00 00 00 00 00 00 -- 030A70
00 00 00 00 00 00 00 00 00 00 00 00 00 00 00 00 -- 030A80
00 00 00 00 00 00 00 00 00 00 00 00 00 00 00 00 -- 030A90
00 00 00 00 00 00 00 00 00 00 00 00 00 00 00 00 -- 030AA0
00 00 00 00 00 00 00 00 00 00 00 00 00 00 00 00 -- 030AB0
00 00 00 00 00 00 00 00 00 00 00 00 00 00 00 00 -- 030AC0
00 00 00 00 00 00 00 00 00 00 00 00 00 00 00 00 -- 030AD0
00 00 00 00 00 00 00 00 00 00 00 00 00 00 00 00 -- 030AE0
00 00 00 00 00 00 00 00 00 00 00 00 00 00 00 00 -- 030AF0
00 00 00 00 00 00 00 00 00 00 00 00 00 00 00 00 -- 030B00
00 00 00 00 00 00 00 00 00 00 00 00 00 00 00 00 -- 030B10
00 00 00 00 00 00 00 00 00 00 00 00 00 00 00 00 -- 030B20
00 00 00 00 00 00 00 00 00 00 00 00 00 00 00 00 -- 030B30
00 00 00 00 00 00 00 00 00 00 00 00 00 00 00 00 -- 030B40
00 00 00 00 00 00 00 00 00 00 00 00 00 00 00 00 -- 030B50

00 00 00 00 00 00 00 00 00 00 00 00 00 00 00 00 -- 030B60
00 00 00 00 00 00 00 00 00 00 00 00 00 00 00 00 -- 030B70
00 00 00 00 00 00 00 00 00 00 00 00 00 00 00 00 -- 030B80
00 00 00 00 00 00 00 00 00 00 00 00 00 00 00 00 -- 030B90
00 00 00 00 00 00 00 00 00 00 00 00 00 00 00 00 -- 030BA0
00 00 00 00 00 00 00 00 00 00 00 00 00 00 00 00 -- 030BB0
00 00 00 00 00 00 00 00 00 00 00 00 00 00 00 00 -- 030BC0
00 00 00 00 00 00 00 00 00 00 00 00 00 00 00 00 -- 030BD0
00 00 00 00 00 00 00 00 00 00 00 00 00 00 00 00 -- 030BE0
00 00 00 00 00 00 00 00 00 00 00 00 00 00 00 00 -- 030BF0
00 00 00 00 00 00 00 00 00 00 00 00 00 00 01 FE -- 030C00
00 00 00 00 00 00 00 00 00 00 00 00 00 00 00 00 -- 030C10
00 00 00 00 00 00 00 00 00 00 00 00 00 00 00 00 -- 030C20
00 00 00 00 00 00 00 00 00 00 00 00 00 00 00 00 -- 030C30
00 00 00 00 00 00 00 00 00 00 00 00 00 00 00 00 -- 030C40
00 00 00 00 00 00 00 00 00 00 00 00 00 00 00 00 -- 030C50
00 00 00 00 00 00 00 00 00 00 00 00 00 00 00 00 -- 030C60
00 00 00 00 00 00 00 00 00 00 00 00 00 00 00 00 -- 030C70
00 00 00 00 00 00 00 00 00 00 00 00 00 00 00 00 -- 030C80
00 00 00 00 00 00 00 00 00 00 00 00 00 00 00 00 -- 030C90
00 00 00 00 00 00 00 00 00 00 00 00 00 00 00 00 -- 030CA0
00 00 00 00 00 00 00 00 00 00 00 00 00 00 00 00 -- 030CB0
00 00 00 00 00 00 00 00 00 00 00 00 00 00 00 00 -- 030CC0
00 00 00 00 00 00 00 00 00 00 00 00 00 00 00 00 -- 030CD0
00 00 00 00 00 00 00 00 00 00 00 00 00 00 00 00 -- 030CE0
00 00 00 00 00 00 00 00 00 00 00 00 00 00 00 00 -- 030CF0
00 00 00 00 00 00 00 00 00 00 00 00 00 00 00 00 -- 030D00
00 00 00 00 00 00 00 00 00 00 00 00 00 00 00 00 -- 030D10
00 00 00 00 00 00 00 00 00 00 00 00 00 00 00 00 -- 030D20
00 00 00 00 00 00 00 00 00 00 00 00 00 00 00 00 -- 030D30
00 00 00 00 00 00 00 00 00 00 00 00 00 00 00 00 -- 030D40
00 00 00 00 00 00 00 00 00 00 00 00 00 00 00 00 -- 030D50
00 00 00 00 00 00 00 00 00 00 00 00 00 00 00 00 -- 030D60
00 00 00 00 00 00 00 00 00 00 00 00 00 00 00 00 -- 030D70
00 00 00 00 00 00 00 00 00 00 00 00 00 00 00 00 -- 030D80
```

```
00 00 00 00 00 00 00 00 00 00 00 00 00 00 00 00 -- 030D90
00 00 00 00 00 00 00 00 00 00 00 00 00 00 00 00 -- 030DA0
00 00 00 00 00 00 00 00 00 00 00 00 00 00 00 00 -- 030DB0
00 00 00 00 00 00 00 00 00 00 00 00 00 00 00 00 -- 030DC0
00 00 00 00 00 00 00 00 00 00 00 00 00 00 00 00 -- 030DD0
00 00 00 00 00 00 00 00 00 00 00 00 00 00 00 00 -- 030DE0
00 00 00 00 00 00 00 00 00 00 00 00 00 00 00 00 -- 030DF0
00 00 00 00 00 00 00 00 00 00 00 00 00 00 01 FE -- 030E00
00 00 00 00 00 00 00 00 00 00 00 00 00 00 00 00 -- 030E10
00 00 00 00 00 00 00 00 00 00 00 00 00 00 00 00 -- 030E20
00 00 00 00 00 00 00 00 00 00 00 00 00 00 00 00 -- 030E30
00 00 00 00 00 00 00 00 00 00 00 00 00 00 00 00 -- 030E40
00 00 00 00 00 00 00 00 00 00 00 00 00 00 00 00 -- 030E50
00 00 00 00 00 00 00 00 00 00 00 00 00 00 00 00 -- 030E60
00 00 00 00 00 00 00 00 00 00 00 00 00 00 00 00 -- 030E70
00 00 00 00 00 00 00 00 00 00 00 00 00 00 00 00 -- 030E80
00 00 00 00 00 00 00 00 00 00 00 00 00 00 00 00 -- 030E90
00 00 00 00 00 00 00 00 00 00 00 00 00 00 00 00 -- 030EA0
00 00 00 00 00 00 00 00 00 00 00 00 00 00 00 00 -- 030EB0
00 00 00 00 00 00 00 00 00 00 00 00 00 00 00 00 -- 030EC0
00 00 00 00 00 00 00 00 00 00 00 00 00 00 00 00 -- 030ED0
00 00 00 00 00 00 00 00 00 00 00 00 00 00 00 00 -- 030EE0
00 00 00 00 00 00 00 00 00 00 00 00 00 00 00 00 -- 030EF0

00 00 00 00 00 00 00 00 00 00 00 00 00 00 00 00 -- 030F00
C5 00 01 05 C7 37 5C 3E C5 2E 00 00 10 C8 57 56 -- 030F10
7E C5 1D D9 9B 37 60 3E C5 2E 04 45 D9 9B 0A 7E -- 030F20
03 0E 7E 83 1D D9 9B 37 64 3E C5 2E 05 D9 9B 0A -- 030F30
0E 7E 83 00 1C E9 42 9A 05 74 06 0E 7E 83 0B 74 -- 030F40
37 68 3E C5 2E 0E 46 8B 00 00 0E 46 C7 05 75 06 -- 030F50
3E C5 2E 15 D9 9B 37 70 3E C5 2E EE D9 9B 05 89 -- 030F60
37 7A 36 FF 2E 10 76 FF 12 76 FF 1D D9 9B 37 6C -- 030F70
6A 37 74 36 FF 2E 37 76 36 FF 2E 37 78 36 FF 2E -- 030F80
06 DD 2E 9B 10 C4 83 00 64 40 D0 9A 02 BD 68 06 -- 030F90
37 8C 06 DD 2E 9B 1D D9 9B 37 7C 3E C5 2E 37 80 -- 030FA0
C5 2E 37 98 06 DD 2E 9B 1D D9 9B 37 88 3E C5 2E -- 030FB0
A0 3E C5 2E 37 A4 06 DD 2E 9B 1D D9 9B 37 94 3E -- 030FC0
78 75 00 02 3D 05 8B 37 68 3E C5 2E 1D D9 9B 37 -- 030FD0
C5 2E 15 D9 9B 37 B0 3E C5 2E 37 80 06 DD 2E 9B -- 030FE0
2E 9B 1D D9 9B 37 7C 3E C5 2E 15 D9 9B 37 AC 3E -- 030FF0
C5 2E 15 D9 9B 37 B8 3E C5 2E 37 80 06 DD 01 FE -- 031000
2E 9B 1D D9 9B 37 88 3E C5 2E 15 D9 9B 37 B4 3E -- 031010
BC 3E C5 2E 15 D9 9B 37 C0 3E C5 2E 37 C4 06 DD -- 031020
06 DD 2E 9B 1D D9 9B 37 94 3E C5 2E 15 D9 9B 37 -- 031030
9B 37 CC 3E C5 2E 15 D9 9B 37 D0 3E C5 2E 37 A4 -- 031040
8B 37 68 3E C5 2E 01 2F E9 37 A0 3E C5 2E 15 D9 -- 031050
D9 9B 37 B0 3E C5 2E EE D9 9B 77 75 00 03 3D 05 -- 031060
D9 9B 37 7C 3E C5 2E 15 D9 9B 37 AC 3E C5 2E 15 -- 031070
B4 3E C5 2E 15 D9 9B 37 B8 3E C5 2E EE D9 9B 1D -- 031080
9B E8 D9 9B 1D D9 9B 37 88 3E C5 2E 15 D9 9B 37 -- 031090
2E F0 66 DC 9B 05 D9 9B 37 74 3E C5 2E F0 5E DD -- 0310A0
2E 15 D9 9B 37 BC 3E C5 2E 15 D9 9B 37 C0 3E C5 -- 0310B0
C5 2E F0 5E DD 9B E8 D9 9B 1D D9 9B 37 94 3E C5 -- 0310C0
3E C5 2E FF 65 E9 F0 66 DC 9B 05 D9 9B 37 78 3E -- 0310D0
75 00 05 3D FE F6 E9 03 75 00 04 3D 05 8B 37 68 -- 0310E0
2E 15 D9 9B 37 B0 3E C5 2E 37 80 06 DD 2E 9B 63 -- 0310F0
9B 1D D9 9B 37 7C 3E C5 2E 15 D9 9B 37 AC 3E C5 -- 031100
3E C5 2E 15 D9 9B 37 B8 3E C5 2E 37 80 06 DD 2E -- 031110
DD 2E 9B 1D D9 9B 37 88 3E C5 2E 15 D9 9B 37 B4 -- 031120
37 BC 3E C5 2E 15 D9 9B 37 C0 3E C5 2E 37 C4 06 -- 031130
```

223

```
D4  06  DD  2E  9B  1D  D9  9B  37  94  3E  C5  2E  15  D9  9B  --  031140
9B  37  AC  3E  C5  2E  37  80  06  DD  2E  9B  FE  EE  E9  37  --  031150
1D  D9  9B  37  B4  3E  C5  2E  37  80  06  DD  2E  9B  1D  D9  --  031160
2E  9B  1D  D9  9B  37  BC  3E  C5  2E  37  C4  06  DD  2E  9B  --  031170
68  3E  C5  2E  1D  D9  9B  37  CC  3E  C5  2E  37  A4  06  DD  --  031180
B4  3E  C5  2E  37  8C  06  DD  2E  9B  0E  75  00  3D  83  37  --  031190
D9  9B  37  CC  3E  C5  2E  37  B4  36  C4  2E  1D  D9  9B  37  --  0311A0
C5  2E  37  AC  36  C4  2E  F0  5E  DD  9B  24  D8  26  9B  05  --  0311B0
C5  2E  F0  76  DC  9B  24  D8  26  9B  05  D9  9B  37  BC  3E  --  0311C0
37  A0  3E  C5  2E  37  88  36  C4  2E  1D  D9  9B  37  DC  3E  --  0311D0
37  7C  36  C4  2E  F0  5E  DD  9B  24  D8  26  9B  05  D9  9B  --  0311E0
F0  76  DC  9B  24  D8  26  9B  05  D9  9B  37  94  3E  C5  2E  --  0311F0
D9  9B  37  E4  3E  C5  2E  EE  D9  9B  FC  5E  D9  9B  01  FE  --  031200
EC  3E  C5  2E  EE  D9  9B  1D  D9  9B  37  E0  3E  C5  2E  15  --  031210
9B  0A  7E  C5  1D  D9  9B  37  E8  3E  C5  2E  15  D9  9B  37  --  031220
D9  9B  0A  7E  C5  1D  D9  9B  37  E8  3E  C5  2E  04  45  D9  --  031230
D9  9B  37  F4  36  C4  2E  1D  D9  9B  37  F0  3E  C5  2E  05  --  031240
C5  2E  37  E0  36  C4  2E  F0  5E  DD  9B  24  D8  26  9B  05  --  031250
D9  9B  F0  76  DC  9B  24  D8  26  9B  05  D9  9B  37  E8  3E  --  031260
73  00  5C  ED  94  9A  FC  5E  D8  9B  F8  46  D9  9B  F8  5E  --  031270
3E  C5  2E  FC  4E  D8  9B  05  D9  9B  37  F0  3E  C5  2E  23  --  031280
3E  C5  2E  05  D9  9B  37  F0  3E  C5  2E  1D  D9  9B  37  F8  --  031290

FC  76  D8  9B  05  D9  9B  37  E8  3E  C5  2E  21  EB  37  FC  --  0312A0
05  D9  9B  37  E8  3E  C5  2E  1D  D9  9B  37  FC  3E  C5  2E  --  0312B0
00  3D  83  37  68  3E  C5  2E  1D  D9  9B  37  F8  3E  C5  2E  --  0312C0
9A  00  5C  ED  99  9A  05  D9  9B  37  7C  3E  C5  2E  38  75  --  0312D0
C5  2E  05  89  38  00  3E  C5  2E  08  C4  83  00  5C  ED  F9  --  0312E0
00  5C  ED  F9  9A  00  5C  ED  99  9A  05  D9  9B  37  88  3E  --  0312F0
3E  C5  2E  EE  D9  9B  05  89  38  04  3E  C5  2E  08  C4  83  --  031300
1D  D9  9B  38  0C  3E  C5  2E  EE  D9  9B  1D  D9  9B  38  08  --  031310
D8  26  9B  05  D9  9B  37  F8  3E  C5  2E  37  FC  36  C4  2E  --  031320
C5  2E  38  14  06  DD  2E  9B  26  76  00  5C  ED  94  9A  1C  --  031330
37  FC  3E  C5  2E  37  F8  36  C4  2E  1D  D9  9B  38  10  3E  --  031340
2E  9B  24  EB  38  1C  3E  C5  2E  34  D8  26  9B  05  D9  9B  --  031350
FC  36  C4  2E  1D  D9  9B  38  1C  3E  C5  2E  38  14  06  DD  --  031360
3E  C5  2E  34  D8  26  9B  05  D9  9B  37  F8  3E  C5  2E  37  --  031370
15  D9  9B  38  24  3E  C5  2E  EE  D9  9B  1D  D9  9B  38  10  --  031380
05  D9  9B  38  10  3E  C5  2E  1D  D9  9B  38  20  3E  C5  2E  --  031390
D9  9B  37  E8  3E  C5  2E  37  F8  36  C4  2E  F0  5E  D9  9B  --  0313A0
D9  9B  38  28  3E  C5  2E  F0  4E  D8  9B  34  D8  26  9B  05  --  0313B0
36  C4  2E  F0  5E  D9  9B  05  D9  9B  38  1C  3E  C5  2E  1D  --  0313C0
D8  9B  34  D8  26  9B  05  D9  9B  37  F0  3E  C5  2E  37  FC  --  0313D0
10  76  FF  12  76  FF  1D  D9  9B  38  2C  3E  C5  2E  F0  4E  --  0313E0
64  40  D0  9A  01  91  68  03  6A  35  FF  37  5C  3E  C5  2E  --  0313F0
FE  36  FF  2E  10  76  FF  12  76  FF  0A  C4  83  00  01  FE  --  031400
37  EC  36  FF  2E  37  EE  36  FF  2E  37  FC  36  FF  2E  37  --  031410
2E  37  E6  36  FF  2E  37  F8  36  FF  2E  37  FA  36  FF  2E  --  031420
01  92  68  0B  6A  35  FF  37  5C  3E  C5  2E  37  E4  36  FF  --  031430
FF  2E  10  76  FF  12  76  FF  1A  C4  83  00  64  40  D0  9A  --  031440
36  FF  2E  38  0E  36  FF  2E  38  1C  36  FF  2E  38  1E  36  --  031450
0A  36  FF  2E  38  10  36  FF  2E  38  12  36  FF  2E  38  0C  --  031460
68  0B  6A  35  FF  37  5C  3E  C5  2E  38  08  36  FF  2E  38  --  031470
C7  38  30  3E  C5  2E  1A  C4  83  00  64  40  D0  9A  01  93  --  031480
38  3E  C5  2E  FF  FF  05  C7  38  34  3E  C5  2E  FF  FF  05  --  031490
C5  2E  00  00  05  C7  38  3C  3E  C5  2E  00  00  05  C7  38  --  0314A0
8B  55  57  56  CB  5E  5F  C9  9B  00  00  05  C7  38  40  3E  --  0314B0
3E  C5  2E  05  89  0A  7E  C5  05  8B  38  00  3E  C5  2E  EC  --  0314C0
55  57  56  CB  5E  5F  C9  05  89  0E  7E  C5  05  8B  38  04  --  0314D0
6A  35  FF  37  5C  3E  C5  2E  0A  76  FF  0C  76  FF  EC  8B  --  0314E0
```

```
FF  OC  76  FF  OA  C4  83  00  64  40  DO  9A  01  91  68  03  --  0314FO
57  56  CB  5E  5F  C9  04  C4  83  00  34  FO  DE  9A  OA  76  --  031500
35  FF  37  5C  3E  C5  2E  12  76  FF  14  76  FF  EC  8B  55  --  031510
OA  55  9A  OA  C4  83  00  64  40  DO  9A  01  91  68  03  6A  --  031520
76  FF  OC  76  FF  10  6A  10  6A  00  2C  OA  75  9A  00  2C  --  031530
38  48  06  03  2E  04  EO  C1  05  8B  38  34  3E  C5  2E  OA  --  031540
52  OA  C4  83  00  5C  ED  6E  9A  50  52  38  4A  16  8B  2E  --  031550
38  44  06  03  2E  04  EO  C1  05  8B  38  30  3E  C5  2E  50  --  031560
6A  OA  C4  83  00  5C  ED  6E  9A  50  52  38  46  16  8B  2E  --  031570
05  8B  38  34  3E  C5  2E  OE  76  FF  10  76  FF  10  6A  10  --  031580
9A  50  52  38  52  16  8B  2E  38  50  06  03  2E  04  EO  C1  --  031590
05  8B  38  30  3E  C5  2E  50  52  OA  C4  83  00  5C  ED  6E  --  0315A0
9A  50  52  38  4E  16  8B  2E  38  4C  06  03  2E  04  EO  C1  --  0315B0
9A  00  6A  12  76  FF  14  76  FF  OA  C4  83  00  5C  ED  6E  --  0315C0
00  08  C8  57  56  CB  5E  5F  C9  06  C4  83  00  2C  OA  C8  --  0315D0
OE  76  C4  F8  5E  D9  9B  05  D9  9B  37  F8  3E  C5  2E  00  --  0315E0
F8  76  D8  9B  OC  D8  26  9B  05  D9  9B  38  10  3E  C5  2E  --  0315F0
05  D9  9B  37  FC  3E  C5  2E  1D  D9  9B  OA  7E  C5  01  FE  --  031600
4C  D8  26  9B  05  D9  9B  38  1C  3E  C5  2E  F8  5E  D9  9B  --  031610
5E  5F  C9  9B  04  5D  D9  9B  OA  7E  C5  F8  76  D8  9B  04  --  031620
E6  C1  35  8B  38  30  3E  C5  2E  00  00  18  C8  57  56  CB  --  031630

04  E7  C1  3D  8B  38  4E  06  8E  2E  38  4C  36  03  2E  04  --  031640
26  9B  04  45  D9  9B  38  4E  1E  8E  2E  38  4C  3E  03  2E  --  031650
04  E6  C1  35  8B  38  30  3E  C5  2E  E8  5E  DD  9B  24  D8  --  031660
2E  04  E7  C1  3D  8B  38  46  06  8E  2E  38  44  36  03  2E  --  031670
D8  26  9B  04  45  D9  9B  38  46  1E  8E  2E  38  44  3E  03  --  031680
35  8B  38  30  3E  C5  2E  F8  5E  DD  9B  E8  76  DC  9B  24  --  031690
C1  3D  8B  38  4E  06  8E  2E  38  4C  36  03  2E  04  E6  C1  --  0316A0
OC  45  D9  9B  38  4E  1E  8E  2E  38  4C  3E  03  2E  04  E7  --  0316B0
35  8B  38  30  3E  C5  2E  E8  5E  DD  9B  08  64  D8  26  9B  --  0316C0
C1  3D  8B  38  46  06  8E  2E  38  44  36  03  2E  04  E6  C1  --  0316D0
OC  45  D9  9B  38  46  1E  8E  2E  38  44  3E  03  2E  04  E7  --  0316E0
3E  C5  2E  FO  5E  DD  9B  E8  76  DC  9B  08  64  D8  26  9B  --  0316F0
46  1E  8E  2E  38  44  3E  03  2E  04  E7  C1  3D  8B  38  30  --  031700
C1  35  8B  38  30  3E  C5  2E  E8  5E  D9  9B  05  D9  9B  38  --  031710
9B  OA  7E  C5  38  4E  06  8E  2E  38  4C  36  03  2E  04  E6  --  031720
DD  9B  E8  46  D8  9B  F8  4E  DC  9B  24  D8  26  9B  05  D9  --  031730
44  3E  03  2E  04  E7  C1  3D  8B  38  30  3E  C5  2E  F8  5E  --  031740
C5  2E  E8  5E  D9  9B  08  45  D9  9B  38  46  1E  8E  2E  38  --  031750
OA  7E  C5  38  4C  36  03  2E  04  E6  C1  35  8B  38  30  3E  --  031760
46  D8  9B  FO  4E  DC  9B  08  64  D8  26  9B  04  45  D9  9B  --  031770
9B  37  F8  3E  C5  2E  38  10  36  C4  2E  FO  5E  DD  9B  E8  --  031780
1D  D9  9B  OE  7E  C5  34  D8  26  9B  F8  4E  DC  9B  05  D9  --  031790
4E  DC  9B  05  D9  9B  37  FC  3E  C5  2E  38  1C  36  C4  2E  --  0317A0
5E  5F  C9  9B  04  5D  D9  9B  OE  7E  C5  34  D8  26  9B  FO  --  0317B0
9B  05  D9  9B  37  F8  3E  C5  2E  00  00  28  C8  57  56  CB  --  0317C0
26  9B  05  D9  9B  OA  7E  C5  38  10  36  C4  2E  D8  5E  D9  --  0317D0
9B  37  FC  3E  C5  2E  F8  5E  DD  9B  D8  76  D8  9B  OC  D8  --  0317E0
D9  9B  OA  7E  C5  38  1C  36  C4  2E  D8  5E  D9  9B  05  D9  --  0317F0
FO  5E  DD  9B  D8  76  D8  9B  OC  D8  26  9B  04  45  01  FE  --  031800
2E  38  44  36  03  2E  04  E6  C1  35  8B  38  30  3E  C5  2E  --  031810
8E  2E  38  44  3E  03  2E  04  E7  C1  3D  8B  38  46  06  8E  --  031820
2E  D8  5E  DD  9B  24  D8  26  9B  04  45  D9  9B  38  46  1E  --  031830
8E  2E  38  4C  36  03  2E  04  E6  C1  35  8B  38  30  3E  C5  --  031840
1E  8E  2E  38  4C  3E  03  2E  04  E7  C1  3D  8B  38  4E  06  --  031850
DD  9B  D8  76  DC  9B  24  D8  26  9B  04  45  D9  9B  38  4E  --  031860
44  36  03  2E  04  E6  C1  35  8B  38  30  3E  C5  2E  E8  5E  --  031870
38  44  3E  03  2E  04  E7  C1  3D  8B  38  46  06  8E  2E  38  --  031880
DD  9B  08  64  D8  26  9B  OC  45  D9  9B  38  46  1E  8E  2E  --  031890
```

225

```
4C 36 03 2E 04 E6 C1 35 8B 38 30 3E C5 2E D8 5E -- 0318A0
38 4C 3E 03 2E 04 E7 C1 3D 8B 38 4E 06 8E 2E 38 -- 0318B0
DC 9B 08 64 D8 26 9B 0C 45 D9 9B 38 4E 1E 8E 2E -- 0318C0
04 E7 C1 3D 8B 38 30 3E C5 2E E0 5E DD 9B D8 76 -- 0318D0
5E D9 9B 05 D9 9B 38 4E 1E 8E 2E 38 4C 3E 03 2E -- 0318E0
38 44 36 03 2E 04 E6 C1 35 8B 38 30 3E C5 2E D8 -- 0318F0
4E DC 9B 24 D8 26 9B F8 46 DD 9B 38 46 06 8E 2E -- 031900
D9 9B 0E 7E C5 38 54 06 DC 2E 9B D8 46 D8 9B E8 -- 031910
38 4C 3E 03 2E 04 E7 C1 3D 8B 38 30 3E C5 2E 1D -- 031920
3E C5 2E D8 5E D9 9B 08 45 D9 9B 38 4E 1E 8E 2E -- 031930
F0 46 DD 9B 38 44 36 03 2E 04 E6 C1 35 8B 38 30 -- 031940
DC 2E 9B D8 46 D8 9B E0 4E DC 9B 08 64 D8 26 9B -- 031950
56 CB 5E 5F C9 9B 04 5D D9 9B 0E 7E C5 38 54 06 -- 031960
38 5C 36 C4 2E 05 FF 38 30 3E C5 2E EC 8B 55 57 -- 031970
56 CB 5E 5F C9 00 00 05 C7 04 7E 04 3B 26 05 8B -- 031980
38 34 3E C5 2E 05 FF 38 38 3E C5 2E EC 8B 55 57 -- 031990
05 C7 04 7E 04 3B 26 05 8B 38 5C 36 C4 2E 05 FF -- 0319A0
C5 2E 38 3C 36 C4 2E 05 FF 38 3C 3E C5 2E 00 00 -- 0319B0
C5 2E 40 05 8B 0A 7D 04 3B 26 40 05 8B 38 5C 3E -- 0319C0
5F C9 00 00 05 C7 38 40 3E C5 2E 05 89 38 3C 3E -- 0319D0

0E 76 FF 14 75 01 0A 7E 83 EC 8B 55 57 56 CB 5E -- 0319E0
C4 83 00 64 40 D0 9A 6F 6A 03 6A 03 6A 0C 76 FF -- 0319F0
05 8B 38 30 3E C5 2E 0C 76 FF 0E 76 FF 0A 01 FE -- 031A00
8B D8 8B 38 46 16 8B 2E 38 44 06 03 2E 04 E0 C1 -- 031A10
06 03 2E 04 E0 C1 05 8B 50 00 0C 05 C3 8B 51 CA -- 031A20
04 E0 C1 05 8B 50 00 08 05 C3 8B 51 D8 8B 38 44 -- 031A30
05 8B 50 00 04 05 C3 8B 51 D8 8B 38 44 06 03 2E -- 031A40
9A 01 94 68 0A 6A 50 52 38 44 06 03 2E 04 E0 C1 -- 031A50
3E C5 2E 0C 76 FF 0E 76 FF 18 C4 83 00 64 40 D0 -- 031A60
4E 16 8B 2E 38 4C 06 03 2E 04 E0 C1 05 8B 38 30 -- 031A70
E0 C1 05 8B 50 00 0C 05 C3 8B 51 CA 8B D8 8B 38 -- 031A80
8B 50 00 08 05 C3 8B 51 D8 8B 38 4C 06 03 2E 04 -- 031A90
04 05 C3 8B 51 D8 8B 38 4C 06 03 2E 04 E0 C1 05 -- 031AA0
0A 6A 50 52 38 4C 06 03 2E 04 E0 C1 05 8B 50 00 -- 031AB0
56 CB 5E 5F C9 18 C4 83 00 64 40 D0 9A 01 95 68 -- 031AC0
9B 37 F8 3E C5 2E 38 10 36 C4 2E 00 00 18 C8 57 -- 031AD0
2E 38 1C 36 C4 2E EC 5E D9 9B 34 D8 26 9B 05 D9 -- 031AE0
2E E8 5E D9 9B 34 D8 26 9B 05 D9 9B 37 FC 3E C5 -- 031AF0
03 2E 04 E7 C1 3D 8B 38 30 3E C5 2E 38 08 36 C4 -- 031B00
9A 1C D8 26 9B 05 D9 9B 38 46 1E 8E 2E 38 44 3E -- 031B10
C5 2E 38 0C 36 C4 2E 00 93 E9 03 74 00 5C ED 94 -- 031B20
1E 8E 2E 38 44 3E 03 2E 04 E7 C1 3D 8B 38 30 3E -- 031B30
75 00 5C ED 94 9A 1C D8 26 9B 08 45 D9 9B 38 46 -- 031B40
04 E7 C1 3D 8B 38 30 3E C5 2E 38 10 36 C4 2E 6B -- 031B50
26 9B 04 45 D9 9B 38 46 1E 8E 2E 38 44 3E 03 2E -- 031B60
C5 2E 38 1C 36 C4 2E 43 75 00 5C ED 94 9A 1C D8 -- 031B70
1E 8E 2E 38 44 3E 03 2E 04 E7 C1 3D 8B 38 30 3E -- 031B80
75 00 5C ED 94 9A 1C D8 26 9B 0C 45 D9 9B 38 46 -- 031B90
46 8D 16 37 E4 36 FF 2E 37 E6 36 FF 2E 10 6A 1B -- 031BA0
30 3E C5 2E 7F EB 0A C4 83 00 5C ED 6E 9A 50 F0 -- 031BB0
38 46 1E 8E 2E 38 44 3E 03 2E 04 E7 C1 3D 8B 38 -- 031BC0
38 30 3E C5 2E F0 5E D9 9B EC 4E D8 9B 05 D9 9B -- 031BD0
9B 38 46 1E 8E 2E 38 44 3E 03 2E 04 E7 C1 3D 8B -- 031BE0
38 30 3E C5 2E F8 5E D9 9B E8 4E D8 9B 08 45 D9 -- 031BF0
46 1E 8E 2E 38 44 3E 03 2E 04 E7 C1 3D 8B 01 FE -- 031C00
3E C5 2E F4 5E D9 9B EC 4E D8 9B 04 45 D9 9B 38 -- 031C10
46 1E 8E 2E 38 44 3E 03 2E 04 E7 C1 3D 8B 38 30 -- 031C20
3E C5 2E FC 5E D9 9B E8 4E D8 9B 0C 45 D9 9B 38 -- 031C30
0C 73 00 5C ED 94 9A 1D D8 9B F0 46 D9 9B 37 E0 -- 031C40
```

226

```
F4  3E  C5  2E  FO  5E  D9  9B  05  D9  9B  37  EO  3E  C5  2E  --  031C50
2E  OC  73  00  5C  ED  94  9A  1D  D8  9B  F8  46  D9  9B  37  --  031C60
37  E8  3E  C5  2E  F8  5E  D9  9B  05  D9  9B  37  F4  3E  C5  --  031C70
C5  2E  OC  76  00  5C  ED  94  9A  1D  D8  9B  F4  46  D9  9B  --  031C80
9B  37  FO  3E  C5  2E  F4  5E  D9  9B  05  D9  9B  37  E8  3E  --  031C90
3E  C5  2E  OC  76  00  5C  ED  94  9A  1D  D8  9B  FC  46  D9  --  031CA0
50  FO  46  8D  16  10  6A  FC  5E  D9  9B  05  D9  9B  37  FO  --  031CB0
C9  9B  OA  C4  83  00  5C  ED  6E  9A  OA  76  FF  OC  76  FF  --  031CC0
C5  2E  38  10  36  C4  2E  00  00  30  C8  57  56  CB  5E  5F  --  031CD0
C4  2E  DC  5E  D9  9B  34  D8  26  9B  05  D9  9B  37  F8  3E  --  031CE0
9B  34  D8  26  9B  05  D9  9B  37  FC  3E  C5  2E  38  1C  36  --  031CF0
C1  3D  8B  38  30  3E  C5  2E  38  08  36  C4  2E  D8  5E  D9  --  031D00
9B  05  D9  9B  38  46  1E  8E  2E  38  44  3E  03  2E  04  E7  --  031D10
36  C4  2E  00  93  E9  03  74  00  5C  ED  94  9A  1C  D8  26  --  031D20
44  3E  03  2E  04  E7  C1  3D  8B  38  30  3E  C5  2E  38  OC  --  031D30
94  9A  1C  D8  26  9B  08  45  D9  9B  38  46  1E  8E  2E  38  --  031D40
8B  38  30  3E  C5  2E  38  10  36  C4  2E  6B  75  00  5C  ED  --  031D50
D9  9B  38  46  1E  8E  2E  38  44  3E  03  2E  04  E7  C1  3D  --  031D60
36  C4  2E  43  75  00  5C  ED  94  9A  1C  D8  26  9B  04  45  --  031D70

44  3E  03  2E  04  E7  C1  3D  8B  38  30  3E  C5  2E  38  1C  --  031D80
94  9A  1C  D8  26  9B  OC  45  D9  9B  38  46  1E  8E  2E  38  --  031D90
E4  36  FF  2E  37  E6  36  FF  2E  10  6A  1B  75  00  5C  ED  --  031DA0
7F  EB  OA  C4  83  00  5C  ED  6E  9A  50  FO  46  8D  16  37  --  031DB0
2E  38  44  3E  03  2E  04  E7  C1  3D  8B  38  30  3E  C5  2E  --  031DC0
2E  FO  5E  D9  9B  DC  4E  D8  9B  05  D9  9B  38  46  1E  8E  --  031DD0
8E  2E  38  44  3E  03  2E  04  E7  C1  3D  8B  38  30  3E  C5  --  031DE0
2E  F8  5E  D9  9B  D8  4E  D8  9B  08  45  D9  9B  38  46  1E  --  031DF0
38  44  3E  03  2E  04  E7  C1  3D  8B  38  30  3E  C5  01  FE  --  031E00
5E  D9  9B  DC  4E  D8  9B  04  45  D9  9B  38  46  1E  8E  2E  --  031E10
38  44  3E  03  2E  04  E7  C1  3D  8B  38  30  3E  C5  2E  F4  --  031E20
5E  D9  9B  D8  4E  D8  9B  OC  45  D9  9B  38  46  1E  8E  2E  --  031E30
ED  94  9A  1D  D8  9B  FO  46  D9  9B  37  EO  3E  C5  2E  FC  --  031E40
FO  5E  D9  9B  05  D9  9B  37  EO  3E  C5  2E  OC  73  00  5C  --  031E50
5C  ED  94  9A  1D  D8  9B  F8  46  D9  9B  37  F4  3E  C5  2E  --  031E60
2E  F8  5E  D9  9B  05  D9  9B  37  F4  3E  C5  2E  OC  73  00  --  031E70
00  5C  ED  94  9A  1D  D8  9B  F4  46  D9  9B  37  E8  3E  C5  --  031E80
C5  2E  F4  5E  D9  9B  05  D9  9B  37  E8  3E  C5  2E  OC  76  --  031E90
76  00  5C  ED  94  9A  1D  D8  9B  FC  46  D9  9B  37  FO  3E  --  031EA0
46  D9  9B  FC  5E  D9  9B  05  D9  9B  37  FO  3E  C5  2E  OC  --  031EB0
76  D8  9B  F8  46  D9  9B  EO  5E  D9  9B  DC  76  D8  9B  FO  --  031EC0
5E  D9  9B  DC  76  D8  9B  F4  46  D9  9B  E8  5E  D9  9B  D8  --  031ED0
3E  C5  2E  EC  5E  D9  9B  D8  76  D8  9B  FC  46  D9  9B  E4  --  031EE0
46  06  8E  2E  38  44  36  03  2E  04  E6  C1  35  8B  38  30  --  031EF0
38  46  1E  8E  2E  38  44  3E  03  2E  04  E7  C1  3D  8B  38  --  031F00
30  3E  C5  2E  DO  5E  DD  9B  24  D8  26  9B  04  45  D9  9B  --  031F10
38  4E  06  8E  2E  38  4C  36  03  2E  04  E6  C1  35  8B  38  --  031F20
9B  38  4E  1E  8E  2E  38  4C  3E  03  2E  04  E7  C1  3D  8B  --  031F30
2E  DC  5E  D9  9B  DO  76  DC  9B  24  D8  26  9B  04  45  D9  --  031F40
8E  2E  38  4C  3E  03  2E  04  E7  C1  3D  8B  38  30  3E  C5  --  031F50
9B  OA  76  C4  1D  D9  9B  OA  7E  C5  05  D9  9B  38  4E  1E  --  031F60
9B  04  D8  26  9B  DC  4E  D8  9B  EO  66  D8  9B  E4  46  D9  --  031F70
36  03  2E  04  E6  C1  35  8B  38  30  3E  C5  2E  04  5D  D9  --  031F80
44  3E  03  2E  04  E7  C1  3D  8B  38  46  06  8E  2E  38  44  --  031F90
9B  08  64  D8  26  9B  OC  45  D9  9B  38  46  1E  8E  2E  38  --  031FA0
36  03  2E  04  E6  C1  35  8B  38  30  3E  C5  2E  DO  5E  DD  --  031FB0
4C  3E  03  2E  04  E7  C1  3D  8B  38  4E  06  8E  2E  38  4C  --  031FC0
9B  08  64  D8  26  9B  OC  45  D9  9B  38  4E  1E  8E  2E  38  --  031FD0
E7  C1  3D  8B  38  30  3E  C5  2E  D8  5E  D9  9B  DO  76  DC  --  031FE0
C5  08  45  D9  9B  38  4E  1E  8E  2E  38  4C  3E  03  2E  04  --  031FF0
```

```
9B  EC  46  D9  9B  0A  76  C4  08  5D  D9  9B  0A  7E  01  FE  --  032000
0C  5D  D9  9B  08  44  D8  26  9B  D8  4E  D8  9B  E8  66  D8  --  032010
00  2C  0A  55  9A  00  00  18  C8  57  56  CB  5E  5F  C9  9B  --  032020
3E  C5  2E  05  D9  9B  38  08  3E  C5  2E  00  2C  0A  75  9A  --  032030
46  1E  8E  2E  38  44  3E  03  2E  04  E7  C1  3D  8B  38  30  --  032040
03  2E  04  E7  C1  3D  8B  38  34  3E  C5  2E  15  D9  9B  38  --  032050
38  0C  3E  C5  2E  1D  D9  9B  38  4A  1E  8E  2E  38  48  3E  --  032060
3E  03  2E  04  E7  C1  3D  8B  38  30  3E  C5  2E  05  D9  9B  --  032070
38  34  3E  C5  2E  08  55  D9  9B  38  46  1E  8E  2E  38  44  --  032080
9B  38  4A  1E  8E  2E  38  48  3E  03  2E  04  E7  C1  3D  8B  --  032090
38  30  3E  C5  2E  05  D9  9B  38  28  3E  C5  2E  08  5D  D9  --  0320A0
9B  38  46  1E  8E  2E  38  44  3E  03  2E  04  E7  C1  3D  8B  --  0320B0
3E  03  2E  04  E7  C1  3D  8B  38  34  3E  C5  2E  04  55  D9  --  0320C0
38  2C  3E  C5  2E  04  5D  D9  9B  38  4A  1E  8E  2E  38  48  --  0320D0
3E  03  2E  04  E7  C1  3D  8B  38  30  3E  C5  2E  05  D9  9B  --  0320E0
38  34  3E  C5  2E  0C  55  D9  9B  38  46  1E  8E  2E  38  44  --  0320F0
9B  38  4A  1E  8E  2E  38  48  3E  03  2E  04  E7  C1  3D  8B  --  032100
38  30  3E  C5  2E  05  D9  9B  37  7C  3E  C5  2E  0C  5D  D9  --  032110

9B  38  4E  1E  8E  2E  38  4C  3E  03  2E  04  E7  C1  3D  8B  --  032120
50  3E  03  2E  04  E7  C1  3D  8B  38  34  3E  C5  2E  15  D9  --  032130
D9  9B  37  88  3E  C5  2E  1D  D9  9B  38  52  1E  8E  2E  38  --  032140
38  4C  3E  03  2E  04  E7  C1  3D  8B  38  30  3E  C5  2E  05  --  032150
3D  8B  38  34  3E  C5  2E  08  55  D9  9B  38  4E  1E  8E  2E  --  032160
5D  D9  9B  38  52  1E  8E  2E  38  50  3E  03  2E  04  E7  C1  --  032170
3E  C5  2E  E8  5E  D9  9B  05  D9  9B  37  7C  3E  C5  2E  08  --  032180
D9  9B  38  28  3E  C5  2E  F0  5E  D9  9B  05  D9  9B  38  10  --  032190
9B  37  94  3E  C5  2E  37  7C  36  C4  2E  F8  5E  D9  9B  05  --  0321A0
D8  9B  F0  76  D8  9B  F8  4E  D8  9B  24  D8  26  9B  05  D9  --  0321B0
4C  3E  03  2E  04  E7  C1  3D  8B  38  30  3E  C5  2E  E8  46  --  0321C0
8B  38  34  3E  C5  2E  04  55  D9  9B  38  4E  1E  8E  2E  38  --  0321D0
D9  9B  38  52  1E  8E  2E  38  50  3E  03  2E  04  E7  C1  3D  --  0321E0
C5  2E  E8  5E  D9  9B  05  D9  9B  37  88  3E  C5  2E  04  5D  --  0321F0
2C  3E  C5  2E  F0  5E  D9  9B  05  D9  9B  38  1C  3E  01  FE  --  032200
3E  C5  2E  37  88  36  C4  2E  F8  5E  D9  9B  05  D9  9B  38  --  032210
76  D8  9B  F8  4E  D8  9B  24  D8  26  9B  05  D9  9B  37  A0  --  032220
2E  04  E7  C1  3D  8B  38  30  3E  C5  2E  E8  46  D8  9B  F0  --  032230
3E  C5  2E  0C  55  D9  9B  38  4E  1E  8E  2E  38  4C  3E  03  --  032240
52  1E  8E  2E  38  50  3E  03  2E  04  E7  C1  3D  8B  38  34  --  032250
C8  9A  0A  76  FF  0C  76  FF  0E  76  FF  0C  5D  D9  9B  38  --  032260
00  6A  C8  57  56  CB  5E  5F  C9  9B  06  C4  83  00  2C  0A  --  032270
76  FF  0C  76  FF  EE  46  89  05  8B  38  30  3E  C5  2E  00  --  032280
08  6A  08  C4  83  00  2C  06  C5  9A  50  A6  46  8D  16  0A  --  032290
00  5C  ED  6E  9A  0A  76  FF  0C  76  FF  50  A6  46  8D  16  --  0322A0
03  2E  04  E7  C1  EE  7E  8B  00  2C  0A  55  9A  0A  C4  83  --  0322B0
F8  5E  DD  9B  04  45  D9  9B  38  46  1E  8E  2E  38  44  3E  --  0322C0
9B  0C  45  D9  9B  38  44  3E  03  2E  04  E7  C1  EE  7E  8B  --  0322D0
EE  76  8B  96  5E  D9  9B  05  D9  9B  0E  7E  C5  F0  5E  DD  --  0322E0
0A  7E  C5  38  46  06  8E  2E  38  44  36  03  2E  04  E6  C1  --  0322F0
9B  9E  5E  DD  9B  96  76  D8  9B  24  D8  26  9B  05  D9  9B  --  032300
45  D9  9B  0E  7E  C5  C6  5E  DD  9B  9E  66  DC  9B  05  D9  --  032310
38  44  36  03  2E  04  E6  C1  EE  76  8B  96  5E  D9  9B  04  --  032320
96  76  D8  9B  08  64  D8  26  9B  04  45  D9  9B  0A  7E  C5  --  032330
BE  5E  DD  9B  9E  66  DC  9B  04  45  D9  9B  9E  5E  DD  9B  --  032340
EE  7E  8B  0A  76  C4  96  5E  D9  9B  05  D9  9B  0E  7E  C5  --  032350
45  D9  9B  38  46  1E  8E  2E  38  44  3E  03  2E  04  E7  C1  --  032360
0A  7E  C5  9E  5E  DD  9B  96  76  D8  9B  24  D8  26  9B  04  --  032370
D9  9B  0E  7E  C5  B6  5E  DD  9B  9E  46  DC  9B  05  D9  9B  --  032380
44  3E  03  2E  04  E7  C1  EE  7E  8B  96  5E  D9  9B  04  45  --  032390
9B  04  64  D8  26  9B  0C  45  D9  9B  38  46  1E  8E  2E  38  --  0323A0
```

228

```
DC 9B 04 45 D9 9B 0A 7E C5 9E 5E DD 9B 96 76 D8 -- 0323B0
4C 3E 03 2E 04 E7 C1 EE 7E 8B AE 5E DD 9B 9E 46 -- 0323C0
EE 7E 8B E6 5E DD 9B 05 D9 9B 38 4E 1E 8E 2E 38 -- 0323D0
DE 5E DD 9B 08 45 D9 9B 38 4C 3E 03 2E 04 E7 C1 -- 0323E0
9B 04 45 D9 9B 38 4C 3E 03 2E 04 E7 C1 EE 7E 8B -- 0323F0
38 4C 3E 03 2E 04 E7 C1 EE 7E 8B D6 5E DD 01 FE -- 032400
00 6A 14 76 FF 16 76 FF CE 5E DD 9B 0C 45 D9 9B -- 032410
2E 38 20 36 FF 2E 38 22 36 FF 2E 12 76 FF 01 6A -- 032420
ED 99 9A AE 46 DD 9B 37 AC 36 FF 2E 37 AE 36 FF -- 032430
9A BE 46 DD 9B 00 5C ED 99 9A B6 46 DD 9B 00 5C -- 032440
46 DD 9B 00 5C ED 99 9A C6 46 DD 9B 00 5C ED 99 -- 032450
9B 00 5C ED 99 9A D6 46 DD 9B 00 5C ED 99 9A CE -- 032460
5C ED 99 9A E6 46 DD 9B 00 5C ED 99 9A DE 46 DD -- 032470
57 56 CB 5E 5F C9 9B 52 C4 83 00 2C 2E 45 9A 00 -- 032480
76 FF EE 46 89 05 8B 38 30 3E C5 2E 00 00 6A C8 -- 032490
C4 83 00 2C 06 C5 9A 50 A6 46 8D 16 0A 76 FF 0C -- 0324A0
6E 9A 0A 76 FF 0C 76 FF 50 A6 46 8D 16 08 6A 08 -- 0324B0

E7 C1 EE 7E 8B 00 2C 0A 55 9A 0A C4 83 00 5C ED -- 0324C0
9B 04 45 D9 9B 38 46 1E 8E 2E 38 44 3E 03 2E 04 -- 0324D0
D9 9B 38 44 3E 03 2E 04 E7 C1 EE 7E 8B F8 5E DD -- 0324E0
96 5E D9 9B 05 D9 9B 0E 7E C5 F0 5E DD 9B 0C 45 -- 0324F0
38 46 06 8E 2E 38 44 36 03 2E 04 E6 C1 EE 76 8B -- 032500
DD 9B 96 76 D8 9B 24 D8 26 9B 05 D9 9B 0A 7E C5 -- 032510
0E 7E C5 C6 5E DD 9B 9E 66 DC 9B 05 D9 9B 9E 5E -- 032520
03 2E 04 E6 C1 EE 76 8B 96 5E D9 9B 04 45 D9 9B -- 032530
9B 08 64 D8 26 9B 04 45 D9 9B 0A 7E C5 38 44 36 -- 032540
9B 9E 66 DC 9B 04 45 D9 9B 9E 5E DD 9B 96 76 D8 -- 032550
0A 76 C4 96 5E D9 9B 05 D9 9B 0E 7E C5 BE 5E DD -- 032560
38 46 1E 8E 2E 38 44 3E 03 2E 04 E7 C1 EE 7E 8B -- 032570
9E 5E DD 9B 96 76 D8 9B 24 D8 26 9B 04 45 D9 9B -- 032580
7E C5 B6 5E DD 9B 9E 46 DC 9B 05 D9 9B 0A 7E C5 -- 032590
2E 04 E7 C1 EE 7E 8B 96 5E D9 9B 04 45 D9 9B 0E -- 0325A0
D8 26 9B 0C 45 D9 9B 38 46 1E 8E 2E 38 44 3E 03 -- 0325B0
45 D9 9B 0A 7E C5 9E 5E DD 9B 96 76 D8 9B 04 64 -- 0325C0
2E 04 E7 C1 EE 7E 8B AE 5E DD 9B 9E 46 DC 9B 04 -- 0325D0
E6 5E DD 9B 05 D9 9B 38 4E 1E 8E 2E 38 4C 3E 03 -- 0325E0
9B 08 45 D9 9B 38 4C 3E 03 2E 04 E7 C1 EE 7E 8B -- 0325F0
38 4C 3E 03 2E 04 E7 C1 EE 7E 8B DE 5E DD 01 FE -- 032600
03 2E 04 E7 C1 EE 7E 8B D6 5E DD 9B 04 45 D9 9B -- 032610
76 FF 16 76 FF CE 5E DD 9B 0C 45 D9 9B 38 4C 3E -- 032620
36 FF 2E 38 22 36 FF 2E 12 76 FF 01 6A 01 6A 14 -- 032630
AE 46 DD 9B 37 AC 36 FF 2E 37 AE 36 FF 2E 38 20 -- 032640
DD 9B 00 5C ED 99 9A B6 46 DD 9B 00 5C ED 99 9A -- 032650
00 5C ED 99 9A C6 46 DD 9B 00 5C ED 99 9A BE 46 -- 032660
ED 99 9A D6 46 DD 9B 00 5C ED 99 9A CE 46 DD 9B -- 032670
9A E6 46 DD 9B 00 5C ED 99 9A DE 46 DD 9B 00 5C -- 032680
60 3E C5 2E 52 C4 83 00 2C 2E 45 9A 00 5C ED 99 -- 032690
00 00 05 C7 04 75 00 02 3D 05 89 05 8B 05 FF 38 -- 0326A0
44 06 03 2E 04 E0 C1 05 8B 38 30 3E C5 2E 10 6A -- 0326B0
C1 05 8B 38 60 3E C5 2E 50 52 38 46 16 8B 2E 38 -- 0326C0
6E 9A 50 52 38 66 16 8B 2E 38 64 06 03 2E 04 E0 -- 0326D0
C1 05 8B 38 30 3E C5 2E 10 6A 0A C4 83 00 5C ED -- 0326E0
C5 2E 50 52 38 4E 16 8B 2E 38 4C 06 03 2E 04 E0 -- 0326F0
16 8B 2E 38 68 06 03 2E 04 E0 C1 05 8B 38 60 3E -- 032700
5E 5F C9 9B 0A C4 83 00 5C ED 6E 9A 50 52 38 6A -- 032710
46 89 05 8B 38 60 3E C5 2E 00 00 02 C8 57 56 CB -- 032720
2E 38 64 06 03 2E 04 E0 C1 0A 76 FF 0C 76 FF FE -- 032730
8B 50 00 0C 05 C3 8B 51 CA 8B D8 8B 38 66 16 8B -- 032740
05 C3 8B 51 D8 8B 38 64 06 03 2E 04 E0 C1 FE 46 -- 032750
```

```
D8 8B 38 64 06 03 2E 04 E0 C1 FE 46 8B 50 00 08 -- 032760
06 03 2E 04 E0 C1 FE 46 8B 50 00 04 05 C3 8B 51 -- 032770
C4 83 00 64 40 D0 9A 01 94 68 0A 6A 50 52 38 64 -- 032780
06 03 2E 04 E0 C1 FE 46 8B 0A 76 FF 0C 76 FF 18 -- 032790
0C 05 C3 8B 51 CA 8B D8 8B 38 6A 16 8B 2E 38 68 -- 0327A0
51 D8 8B 38 68 06 03 2E 04 E0 C1 FE 46 8B 50 00 -- 0327B0
68 06 03 2E 04 E0 C1 FE 46 8B 50 00 08 05 C3 8B -- 0327C0
04 E0 C1 FE 46 8B 50 00 04 05 C3 8B 51 D8 8B 38 -- 0327D0
64 40 D0 9A 01 95 68 0A 6A 50 52 38 68 06 03 2E -- 0327E0
0C 76 FF EC 8B 55 57 56 CB 5E 5F C9 18 C4 83 00 -- 0327F0
2E 04 E0 C1 05 8B 38 30 3E C5 2E 0A 76 FF 01 FE -- 032800
C3 8B 51 CA 8B D8 8B 38 46 16 8B 2E 38 44 06 03 -- 032810
D8 8B 38 44 06 03 2E 04 E0 C1 05 8B 50 00 0C 05 -- 032820
44 06 03 2E 04 E0 C1 05 8B 50 00 08 05 C3 8B 51 -- 032830
2E 04 E0 C1 05 8B 50 00 04 05 C3 8B 51 D8 8B 38 -- 032840
00 64 40 D0 9A 01 94 68 0A 6A 50 52 38 44 06 03 -- 032850

05 8B 38 30 3E C5 2E 0A 76 FF 0C 76 FF 18 C4 83 -- 032860
8B D8 8B 38 4E 16 8B 2E 38 4C 06 03 2E 04 E0 C1 -- 032870
06 03 2E 04 E0 C1 05 8B 50 00 0C 05 C3 8B 51 CA -- 032880
04 E0 C1 05 8B 50 00 08 05 C3 8B 51 D8 8B 38 4C -- 032890
05 8B 50 00 04 05 C3 8B 51 D8 8B 38 4C 06 03 2E -- 0328A0
9A 01 95 68 0A 6A 50 52 38 4C 06 03 2E 04 E0 C1 -- 0328B0
00 6A C8 57 56 CB 5E 5F C9 18 C4 83 00 64 40 D0 -- 0328C0
76 FF 0C 76 FF EE 46 89 05 8B 38 30 3E C5 2E 00 -- 0328D0
08 6A 08 C4 83 00 2C 06 C5 9A 50 A6 46 8D 16 0A -- 0328E0
00 5C ED 6E 9A 0A 76 FF 0C 76 FF 50 A6 46 8D 16 -- 0328F0
03 2E 04 E7 C1 EE 7E 8B 00 2C 0A 55 9A 0A C4 83 -- 032900
F8 5E DD 9B 04 45 D9 9B 38 46 1E 8E 2E 38 44 3E -- 032910
9B 0C 45 D9 9B 38 44 3E 03 2E 04 E7 C1 EE 7E 8B -- 032920
45 D9 9B C6 5E DD 9B 05 D9 9B 0A 7E C5 F0 5E DD -- 032930
C4 96 5E D9 9B 05 D9 9B 0E 7E C5 BE 5E DD 9B 04 -- 032940
1E 8E 2E 38 44 3E 03 2E 04 E7 C1 EE 7E 8B 0A 76 -- 032950
DD 9B 96 76 D8 9B 24 D8 26 9B 04 45 D9 9B 38 46 -- 032960
B6 5E DD 9B 9E 46 DC 9B 05 D9 9B 0A 7E C5 9E 5E -- 032970
E7 C1 EE 7E 8B 96 5E D9 9B 04 45 D9 9B 0E 7E C5 -- 032980
9B 0C 45 D9 9B 38 46 1E 8E 2E 38 44 3E 03 2E 04 -- 032990
9B 0A 7E C5 9E 5E DD 9B 96 76 D8 9B 04 64 D8 26 -- 0329A0
E7 C1 EE 7E 8B AE 5E DD 9B 9E 46 DC 9B 04 45 D9 -- 0329B0
DD 9B 05 D9 9B 38 4E 1E 8E 2E 38 4C 3E 03 2E 04 -- 0329C0
45 D9 9B 38 4C 3E 03 2E 04 E7 C1 EE 7E 8B E6 5E -- 0329D0
38 4C 3E 03 2E 04 E7 C1 EE 7E 8B DE 5E DD 9B 08 -- 0329E0
03 2E 04 E7 C1 EE 7E 8B D6 5E DD 9B 04 45 D9 9B -- 0329F0
16 76 FF CE 5E DD 9B 0C 45 D9 9B 38 4C 3E 01 FE -- 032A00
2E 38 22 36 FF 2E 12 76 FF 01 6A 00 6A 14 76 FF -- 032A10
DD 9B 37 AC 36 FF 2E 37 AE 36 FF 2E 38 20 36 FF -- 032A20
00 5C ED 99 9A B6 46 DD 9B 00 5C ED 99 9A AE 46 -- 032A30
ED 99 9A C6 46 DD 9B 00 5C ED 99 9A BE 46 DD 9B -- 032A40
9A D6 46 DD 9B 00 5C ED 99 9A CE 46 DD 9B 00 5C -- 032A50
46 DD 9B 00 5C ED 99 9A DE 46 DD 9B 00 5C ED 99 -- 032A60
C9 9B 52 C4 83 00 2C 2E 45 9A 00 5C ED 99 9A E6 -- 032A70
05 8B 38 30 3E C5 2E 00 00 62 C8 57 56 CB 5E 5F -- 032A80
1C D8 26 9B 05 D9 9B 0A 7E C5 0E 76 C4 EE 46 89 -- 032A90
5E DD 9B 05 D9 9B 0E 7E C5 20 76 00 5C ED 94 9A -- 032AA0
46 DD 9B 1D D9 9B 0E 7E C5 05 D9 9B 0A 7E C5 F8 -- 032AB0
45 D9 9B 0A 7E C5 0E 76 C4 1D D9 9B 0A 7E C5 F8 -- 032AC0
0E 7E C5 24 76 00 5C ED 94 9A 04 5C D8 26 9B 04 -- 032AD0
C5 04 45 D9 9B 0A 7E C5 F8 5E DD 9B 04 45 D9 9B -- 032AE0
5D D9 9B 0A 7E C5 F8 46 DD 9B 04 5D D9 9B 0E 7E -- 032AF0
2C 06 C5 9A 50 A6 46 8D 16 0A 76 FF 0C 76 FF 04 -- 032B00
```

230

```
AA  46  D9  9B  C6  5E  DD  9B  A6  46  D9  9B  08  C4  83  00  --  032B10
9A  50  A6  46  8D  16  0E  76  FF  10  76  FF  BE  5E  DD  9B  --  032B20
9B  B6  5E  DD  9B  A6  46  D9  9B  08  C4  83  00  2C  06  C5  --  032B30
36  03  2E  04  E6  C1  EE  76  8B  AE  5E  DD  9B  AA  46  D9  --  032B40
3E  03  2E  04  E7  C1  EE  7E  8B  38  46  06  8E  2E  38  44  --  032B50
08  64  D8  26  9B  0C  45  D9  9B  38  46  1E  8E  2E  38  44  --  032B60
8B  38  44  36  03  2E  04  E6  C1  EE  76  8B  9E  5E  DD  9B  --  032B70
26  9B  04  45  D9  9B  38  44  3E  03  2E  04  E7  C1  EE  7E  --  032B80
DC  9B  BE  46  DD  9B  F8  5E  DD  9B  9E  76  DC  9B  24  D8  --  032B90
AE  46  DD  9B  02  E2  E9  03  72  00  5C  ED  94  9A  AE  5E  --  032BA0
C6  66  DC  9B  B6  46  DD  9B  9E  5E  DD  9B  BE  66  DC  9B  --  032BB0
F8  5E  DC  9B  F0  46  DD  9B  F0  5E  DD  9B  9E  76  DC  9B  --  032BC0
9B  37  DC  3E  C5  2E  00  E7  E9  03  72  00  5C  ED  94  9A  --  032BD0
46  8D  16  2B  77  00  5C  ED  94  9A  F0  5E  DC  9B  05  D9  --  032BE0
C6  46  8D  16  50  B6  46  8D  16  50  BE  46  8D  16  50  AE  --  032BF0

F8  46  DD  9B  00  5C  ED  99  9A  F0  46  DD  9B  50  01  FE  --  032C00
9B  37  DC  3E  C5  2E  01  87  E9  FF  6A  00  5C  ED  99  9A  --  032C10
3E  C5  2E  66  76  00  5C  ED  94  9A  F0  5E  DC  9B  05  D9  --  032C20
53  73  00  5C  ED  94  9A  F8  5E  DC  9B  05  D9  9B  37  DC  --  032C30
16  50  B6  46  8D  16  50  BE  46  8D  16  50  AE  46  8D  16  --  032C40
3E  C5  2E  00  5C  ED  99  9A  F0  46  DD  9B  50  C6  46  8D  --  032C50
2C  1F  67  9A  01  6A  00  5C  ED  99  9A  05  D9  9B  37  DC  --  032C60
8D  16  50  BE  46  8D  16  50  AE  46  8D  16  22  C4  83  00  --  032C70
05  D9  9B  37  DC  3E  C5  2E  50  C6  46  8D  16  50  B6  46  --  032C80
46  8D  16  50  BE  46  8D  16  50  AE  46  8D  16  FF  74  E9  --  032C90
00  5C  ED  99  9A  F0  46  DD  9B  50  C6  46  8D  16  50  B6  --  032CA0
00  2C  1F  67  9A  01  6A  00  5C  ED  99  9A  F8  46  DD  9B  --  032CB0
9A  F0  5E  DC  9B  05  D9  9B  37  DC  3E  C5  2E  00  E3  E9  --  032CC0
50  BE  46  8D  16  50  AE  46  8D  16  2A  72  00  5C  ED  94  --  032CD0
99  9A  F0  46  DD  9B  50  C6  46  8D  16  50  B6  46  8D  16  --  032CE0
BB  EB  FF  6A  00  5C  ED  99  9A  F8  46  DD  9B  00  5C  ED  --  032CF0
5C  ED  94  9A  F0  5E  DC  9B  05  D9  9B  37  DC  3E  C5  2E  --  032D00
9A  F8  5E  DC  9B  05  D9  9B  37  DC  3E  C5  2E  66  73  00  --  032D10
50  BE  46  8D  16  50  AE  46  8D  16  53  76  00  5C  ED  94  --  032D20
99  9A  F0  46  DD  9B  50  C6  46  8D  16  50  B6  46  8D  16  --  032D30
00  5C  ED  99  9A  05  D9  9B  37  DC  3E  C5  2E  00  5C  ED  --  032D40
16  50  AE  46  8D  16  22  C4  83  00  2C  1F  CE  9A  01  6A  --  032D50
C5  2E  50  C6  46  8D  16  50  B6  46  8D  16  50  BE  46  8D  --  032D60
8D  16  50  AE  46  8D  16  FF  75  E9  05  D9  9B  37  DC  3E  --  032D70
46  DD  9B  50  C6  46  8D  16  50  B6  46  8D  16  50  BE  46  --  032D80
6A  00  5C  ED  99  9A  F8  46  DD  9B  00  5C  ED  99  9A  F0  --  032D90
2E  04  E7  C1  EE  7E  8B  22  C4  83  00  2C  1F  CE  9A  01  --  032DA0
E6  5E  DD  9B  05  D9  9B  38  4E  1E  8E  2E  38  4C  3E  03  --  032DB0
9B  08  45  D9  9B  38  4C  3E  03  2E  04  E7  C1  EE  7E  8B  --  032DC0
D9  9B  38  4C  3E  03  2E  04  E7  C1  EE  7E  8B  DE  5E  DD  --  032DD0
4C  3E  03  2E  04  E7  C1  EE  7E  8B  D6  5E  DD  9B  04  45  --  032DE0
5E  DC  9B  C6  46  DD  9B  CE  5E  DD  9B  0C  45  D9  9B  38  --  032DF0
46  DD  9B  00  85  E9  03  72  00  5C  ED  94  9A  B6  01  FE  --  032E00
2C  0A  55  9A  76  73  00  5C  ED  94  9A  AE  5E  DC  9B  BE  --  032E10
FF  2E  12  76  FF  01  6A  00  6A  14  76  FF  16  76  FF  00  --  032E20
36  FF  2E  37  AE  36  FF  2E  38  20  36  FF  2E  38  22  36  --  032E30
9A  B6  46  DD  9B  00  5C  ED  99  9A  AE  46  DD  9B  37  AC  --  032E40
46  DD  9B  00  5C  ED  99  9A  BE  46  DD  9B  00  5C  ED  99  --  032E50
9B  00  5C  ED  99  9A  CE  46  DD  9B  00  5C  ED  99  9A  C6  --  032E60
5C  ED  99  9A  DE  46  DD  9B  00  5C  ED  99  9A  D6  46  DD  --  032E70
83  00  2C  2E  45  9A  00  5C  ED  99  9A  E6  46  DD  9B  00  --  032E80
24  76  C4  00  00  08  C8  57  56  CB  5E  5F  C9  9B  52  C4  --  032E90
DD  9B  F8  5E  DD  9B  24  DC  26  9B  05  DD  9B  28  7E  C5  --  032EA0
DD  9B  14  5E  DD  9B  F8  4E  DC  9B  14  66  DC  9B  0C  46  --  032EB0
```

231

```
9B  0B  73  00  5C  ED  94  9A  38  6C  1E  DC  2E  9B  14  46  --  032EC0
0C  75  01  0A  7E  83  14  5E  DD  9B  E0  D9  9B  14  46  DD  --  032ED0
9B  20  7E  C5  0A  EB  14  46  DC  9B  05  DD  9B  20  7E  C5  --  032EE0
57  56  CB  5E  5F  C9  9B  1D  DD  9B  14  66  DC  9B  05  DD  --  032EF0
DC  26  9B  05  DD  9B  20  7E  C5  1C  76  C4  00  00  10  C8  --  032F00
9B  14  76  DC  9B  38  14  06  DD  2E  9B  F0  5E  DD  9B  24  --  032F10
66  DC  9B  0C  76  DC  9B  38  14  06  DD  2E  9B  F8  5E  DD  --  032F20
DC  2E  9B  14  46  DD  9B  14  5E  DD  9B  F0  4E  DC  9B  F8  --  032F30
D9  9B  14  46  DD  9B  0B  73  00  5C  ED  94  9A  38  6C  1E  --  032F40
DD  9B  28  7E  C5  0C  75  01  0A  7E  83  14  5E  DD  9B  E0  --  032F50
66  DC  9B  05  DD  9B  28  7E  C5  0A  EB  14  46  DC  9B  05  --  032F60
2E  00  00  20  C8  57  56  CB  5E  5F  C9  9B  1D  DD  9B  14  --  032F70
8E  2E  38  4C  3E  03  2E  04  E7  C1  3D  8B  38  30  3E  C5  --  032F80
8B  38  30  3E  C5  2E  E8  5E  D9  9B  05  D9  9B  38  4E  1E  --  032F90

D9  9B  38  4E  1E  8E  2E  38  4C  3E  03  2E  04  E7  C1  3D  --  032FA0
04  E7  C1  3D  8B  38  30  3E  C5  2E  EC  5E  D9  9B  08  45  --  032FB0
D9  9B  04  45  D9  9B  38  4E  1E  8E  2E  38  4C  3E  03  2E  --  032FC0
4C  3E  03  2E  04  E7  C1  3D  8B  38  30  3E  C5  2E  E0  5E  --  032FD0
8D  16  E4  5E  D9  9B  0C  45  D9  9B  38  4E  1E  8E  2E  38  --  032FE0
08  C4  83  00  34  EE  EE  9A  50  E8  46  8D  16  50  F8  46  --  032FF0
34  EE  EE  9A  50  E0  46  8D  16  50  F0  46  8D  16  01  FE  --  033000
D9  9B  1D  D9  9B  0A  7E  C5  F8  46  D9  9B  08  C4  83  00  --  033010
D9  9B  F8  66  D8  9B  F0  46  D9  9B  04  5D  D9  9B  FC  46  --  033020
C9  9B  08  5D  D9  9B  FC  66  D8  9B  F4  46  D9  9B  0C  5D  --  033030
3D  05  8B  38  3C  3E  C5  2E  EC  8B  55  57  56  CB  5E  5F  --  033040
0D  FF  38  34  3E  C5  2E  0D  FF  01  DF  E9  03  7F  00  01  --  033050
FF  3D  05  8B  38  34  3E  C5  2E  0D  FF  38  38  3E  C5  2E  --  033060
26  05  8B  38  38  3E  C5  2E  38  5C  36  C4  2E  2A  75  FF  --  033070
38  34  3E  C5  2E  05  8B  38  5C  3E  C5  2E  10  7E  04  3B  --  033080
3E  C5  2E  00  00  05  C7  38  34  3E  C5  2E  09  EB  05  89  --  033090
3D  8B  38  34  3E  C5  2E  00  2C  0A  55  9A  05  FF  38  40  --  0330A0
05  D9  9B  38  4A  1E  8E  2E  38  48  3E  03  2E  04  E7  C1  --  0330B0
2E  38  44  3E  03  2E  04  E7  C1  3D  8B  38  30  3E  C5  2E  --  0330C0
E7  C1  3D  8B  38  34  3E  C5  2E  1D  D9  9B  38  46  1E  8E  --  0330D0
2E  08  45  D9  9B  38  4A  1E  8E  2E  38  48  3E  03  2E  04  --  0330E0
8E  2E  38  44  3E  03  2E  04  E7  C1  3D  8B  38  30  3E  C5  --  0330F0
E7  C1  3D  8B  38  34  3E  C5  2E  08  5D  D9  9B  38  46  1E  --  033100
2E  04  45  D9  9B  38  4A  1E  8E  2E  38  48  3E  03  2E  04  --  033110
8E  2E  38  44  3E  03  2E  04  E7  C1  3D  8B  38  30  3E  C5  --  033120
E7  C1  3D  8B  38  34  3E  C5  2E  04  5D  D9  9B  38  46  1E  --  033130
2E  0C  45  D9  9B  38  4A  1E  8E  2E  38  48  3E  03  2E  04  --  033140
8E  2E  38  44  3E  03  2E  04  E7  C1  3D  8B  38  30  3E  C5  --  033150
E7  C1  3D  8B  38  34  3E  C5  2E  0C  5D  D9  9B  38  46  1E  --  033160
C5  2E  05  D9  9B  38  52  1E  8E  2E  38  50  3E  03  2E  04  --  033170
1E  8E  2E  38  4C  3E  03  2E  04  E7  C1  3D  8B  38  30  3E  --  033180
2E  04  E7  C1  3D  8B  38  34  3E  C5  2E  1D  D9  9B  38  4E  --  033190
3E  C5  2E  08  45  D9  9B  38  52  1E  8E  2E  38  50  3E  03  --  0331A0
4E  1E  8E  2E  38  4C  3E  03  2E  04  E7  C1  3D  8B  38  30  --  0331B0
2E  04  E7  C1  3D  8B  38  34  3E  C5  2E  08  5D  D9  9B  38  --  0331C0
3E  C5  2E  04  45  D9  9B  38  52  1E  8E  2E  38  50  3E  03  --  0331D0
4E  1E  8E  2E  38  4C  3E  03  2E  04  E7  C1  3D  8B  38  30  --  0331E0
2E  04  E7  C1  3D  8B  38  34  3E  C5  2E  04  5D  D9  9B  38  --  0331F0
2E  0C  45  D9  9B  38  52  1E  8E  2E  38  50  3E  03  01  FE  --  033200
8E  2E  38  4C  3E  03  2E  04  E7  C1  3D  8B  38  30  3E  C5  --  033210
0A  76  FF  0C  76  FF  0E  76  FF  0C  5D  D9  9B  38  4E  1E  --  033220
55  57  56  CB  5E  5F  C9  9B  06  C4  83  00  2C  0A  C8  9A  --  033230
C5  2E  38  3C  36  C4  2E  05  FF  38  3C  3E  C5  2E  EC  8B  --  033240
C5  2E  40  05  8B  0A  7D  04  3B  26  40  05  8B  38  5C  3E  --  033250
40  3E  C5  2E  05  FF  38  38  3E  C5  2E  05  89  38  3C  3E  --  033260
```

232

```
8B  38  5C  36  C4  2E  05  FF  38  34  3E  C5  2E  0D  FF  38  --  033270
2E  00  2C  0A  55  9A  00  00  05  C7  04  7E  04  3B  26  05  --  033280
8E  2E  38  48  3E  03  2E  04  E7  C1  3D  8B  38  34  3E  C5  --  033290
04  E7  C1  3D  8B  38  30  3E  C5  2E  05  D9  9B  38  4A  1E  --  0332A0
3E  C5  2E  1D  D9  9B  38  46  1E  8E  2E  38  44  3E  03  2E  --  0332B0
4A  1E  8E  2E  38  48  3E  03  2E  04  E7  C1  3D  8B  38  34  --  0332C0
2E  04  E7  C1  3D  8B  38  30  3E  C5  2E  08  45  D9  9B  38  --  0332D0
3E  C5  2E  08  5D  D9  9B  38  46  1E  8E  2E  38  44  3E  03  --  0332E0
4A  1E  8E  2E  38  48  3E  03  2E  04  E7  C1  3D  8B  38  34  --  0332F0
2E  04  E7  C1  3D  8B  38  30  3E  C5  2E  04  45  D9  9B  38  --  033300
3E  C5  2E  04  5D  D9  9B  38  46  1E  8E  2E  38  44  3E  03  --  033310
4A  1E  8E  2E  38  48  3E  03  2E  04  E7  C1  3D  8B  38  34  --  033320
2E  04  E7  C1  3D  8B  38  30  3E  C5  2E  0C  45  D9  9B  38  --  033330

3E  C5  2E  0C  5D  D9  9B  38  46  1E  8E  2E  38  44  3E  03  --  033340
52  1E  8E  2E  38  50  3E  03  2E  04  E7  C1  3D  8B  38  34  --  033350
03  2E  04  E7  C1  3D  8B  38  30  3E  C5  2E  05  D9  9B  38  --  033360
38  34  3E  C5  2E  1D  D9  9B  38  4E  1E  8E  2E  38  4C  3E  --  033370
9B  38  52  1E  8E  2E  38  50  3E  03  2E  04  E7  C1  3D  8B  --  033380
3E  03  2E  04  E7  C1  3D  8B  38  30  3E  C5  2E  08  45  D9  --  033390
38  34  3E  C5  2E  08  5D  D9  9B  38  4E  1E  8E  2E  38  4C  --  0333A0
9B  38  52  1E  8E  2E  38  50  3E  03  2E  04  E7  C1  3D  8B  --  0333B0
3E  03  2E  04  E7  C1  3D  8B  38  30  3E  C5  2E  04  45  D9  --  0333C0
38  34  3E  C5  2E  04  5D  D9  9B  38  4E  1E  8E  2E  38  4C  --  0333D0
9B  38  52  1E  8E  2E  38  50  3E  03  2E  04  E7  C1  3D  8B  --  0333E0
3E  03  2E  04  E7  C1  3D  8B  38  30  3E  C5  2E  0C  45  D9  --  0333F0
0E  76  FF  0C  5D  D9  9B  38  4E  1E  8E  2E  38  4C  01  FE  --  033400
C9  9B  06  C4  83  00  2C  0A  C8  9A  0A  76  FF  0C  76  FF  --  033410
35  8B  38  30  3E  C5  2E  00  00  10  C8  57  56  CB  5E  5F  --  033420
C1  3D  8B  38  46  06  8E  2E  38  44  36  03  2E  04  E6  C1  --  033430
04  45  D9  9B  38  46  1E  8E  2E  38  44  3E  03  2E  04  E7  --  033440
C1  35  8B  38  30  3E  C5  2E  F0  5E  DD  9B  24  D8  26  9B  --  033450
E7  C1  3D  8B  38  4E  06  8E  2E  38  4C  36  03  2E  04  E6  --  033460
9B  04  45  D9  9B  38  4E  1E  8E  2E  38  4C  3E  03  2E  04  --  033470
D9  9B  0E  7E  C5  F8  5E  DD  9B  F0  76  DC  9B  24  D8  26  --  033480
C1  35  8B  38  30  3E  C5  2E  1D  D9  9B  F8  76  DC  9B  05  --  033490
E7  C1  3D  8B  38  46  06  8E  2E  38  44  36  03  2E  04  E6  --  0334A0
9B  0C  45  D9  9B  38  46  1E  8E  2E  38  44  3E  03  2E  04  --  0334B0
C1  35  8B  38  30  3E  C5  2E  F0  5E  DD  9B  08  64  D8  26  --  0334C0
E7  C1  3D  8B  38  4E  06  8E  2E  38  4C  36  03  2E  04  E6  --  0334D0
9B  0C  45  D9  9B  38  4E  1E  8E  2E  38  4C  3E  03  2E  04  --  0334E0
9B  0E  7E  C5  F8  5E  DD  9B  F0  76  DC  9B  08  64  D8  26  --  0334F0
76  FF  16  76  FF  04  5D  D9  9B  F8  76  DC  9B  04  45  D9  --  033500
57  9A  0A  76  FF  0C  76  FF  57  10  76  FF  12  76  FF  14  --  033510
00  42  C8  57  56  CB  5E  5F  C9  9B  0E  C4  83  00  2C  13  --  033520
E7  C1  FE  7E  8B  FE  46  89  05  8B  38  30  3E  C5  2E  00  --  033530
DD  9B  05  D9  9B  38  46  1E  8E  2E  38  44  3E  03  2E  04  --  033540
45  D9  9B  38  44  3E  03  2E  04  E7  C1  FE  7E  8B  D6  5E  --  033550
38  44  3E  03  2E  04  E7  C1  FE  7E  8B  CE  5E  DD  9B  08  --  033560
03  2E  04  E7  C1  FE  7E  8B  C6  5E  DD  9B  04  45  D9  9B  --  033570
7E  8B  0A  76  C4  BE  5E  DD  9B  0C  45  D9  9B  38  44  3E  --  033580
D9  9B  38  4E  1E  8E  2E  38  4C  3E  03  2E  04  E7  C1  FE  --  033590
2E  04  E7  C1  FE  7E  8B  F6  5E  DD  9B  04  D8  26  9B  05  --  0335A0
5E  DD  9B  04  44  D8  26  9B  08  45  D9  9B  38  4C  3E  03  --  0335B0
04  45  D9  9B  38  4C  3E  03  2E  04  E7  C1  FE  7E  8B  EE  --  0335C0
03  2E  04  E7  C1  FE  7E  8B  E6  5E  DD  9B  04  D8  26  9B  --  0335D0
DE  5E  DD  9B  04  44  D8  26  9B  0C  45  D9  9B  38  4C  3E  --  0335E0
5C  ED  94  9A  E6  5E  DC  9B  05  D9  9B  37  AC  3E  C5  2E  --  0335F0
05  D9  9B  37  B4  3E  C5  2E  00  B5  E9  03  76  00  01  FE  --  033600
C5  2E  00  9F  E9  03  76  00  5C  ED  94  9A  DE  5E  DC  9B  --  033610
```

```
73 00 5C ED 94 9A F6 5E DC 9B 05 D9 9B 37 BC 3E -- 033620
EE 5E DC 9B 05 D9 9B 37 CC 3E C5 2E 00 89 E9 03 -- 033630
FF 12 76 FF 00 2C 0A 55 9A 76 72 00 5C ED 94 9A -- 033640
FF 2E 38 22 36 FF 2E 0E 76 FF 00 6A 00 6A 10 76 -- 033650
46 DD 9B 37 AC 36 FF 2E 37 AE 36 FF 2E 38 20 36 -- 033660
9B 00 5C ED 99 9A C6 46 DD 9B 00 5C ED 99 9A BE -- 033670
5C ED 99 9A D6 46 DD 9B 00 5C ED 99 9A CE 46 DD -- 033680
99 9A E6 46 DD 9B 00 5C ED 99 9A DE 46 DD 9B 00 -- 033690
F6 46 DD 9B 00 5C ED 99 9A EE 46 DD 9B 00 5C ED -- 0336A0
5F C9 9B 52 C4 83 00 2C 2E 45 9A 00 5C ED 99 9A -- 0336B0
EE 9B 9A 50 F0 46 8D 16 00 00 62 C8 57 56 CB 5E -- 0336C0
8B DE 46 89 05 8B 38 30 3E C5 2E 04 C4 83 00 34 -- 0336D0

9B 38 4E 1E 8E 2E 38 4C 3E 03 2E 04 E7 C1 DE 7E -- 0336E0
4C 3E 03 2E 04 E7 C1 DE 7E 8B D6 5E DD 9B 05 D9 -- 0336F0
2E 04 E7 C1 DE 7E 8B CE 5E DD 9B 08 45 D9 9B 38 -- 033700
C1 DE 7E 8B C6 5E DD 9B 04 45 D9 9B 38 4C 3E 03 -- 033710
C5 BE 5E DD 9B 0C 45 D9 9B 38 4C 3E 03 2E 04 E7 -- 033720
46 D9 9B E8 5E D9 9B 05 D8 9B F0 46 D9 9B 0A 7E -- 033730
D9 9B 37 E8 3E C5 2E EC 5E D9 9B 04 45 D8 9B F8 -- 033740
2E 01 16 E9 03 76 00 5C ED 94 9A 1D D8 9B E8 46 -- 033750
00 5C ED 94 9A 1D D8 9B EC 46 D9 9B 37 F0 3E C5 -- 033760
9A 50 E0 46 8D 16 50 E8 46 8D 16 01 00 E9 03 76 -- 033770
9B B6 5E DD 9B E0 46 D9 9B 08 C4 83 00 2C 06 C5 -- 033780
D8 9B F4 46 D9 9B 0A 7E C5 AE 5E DD 9B E4 46 D9 -- 033790
5E D9 9B 04 45 D8 9B FC 46 D9 9B E8 5E D9 9B 05 -- 0337A0
ED 94 9A 1D D8 9B E8 46 D9 9B 37 E0 3E C5 2E EC -- 0337B0
EC 46 D9 9B 37 F4 3E C5 2E 00 AE E9 03 73 00 5C -- 0337C0
46 8D 16 00 98 E9 03 73 00 5C ED 94 9A 1D D8 9B -- 0337D0
9B 08 C4 83 00 2C 06 C5 9A 50 E0 46 8D 16 50 E8 -- 0337E0
9A 9E 5E DD 9B E4 46 D9 9B A6 5E DD 9B E0 46 D9 -- 0337F0
00 6A 00 6A 10 76 FF 12 76 FF 00 2C 0A 55 01 FE -- 033800
36 FF 2E 38 20 36 FF 2E 38 22 36 FF 2E 0E 76 FF -- 033810
00 5C ED 99 9A 9E 46 DD 9B 37 AC 36 FF 2E 37 AE -- 033820
ED 99 9A AE 46 DD 9B 00 5C ED 99 9A A6 46 DD 9B -- 033830
9A BE 46 DD 9B 00 5C ED 99 9A B6 46 DD 9B 00 5C -- 033840
46 DD 9B 00 5C ED 99 9A C6 46 DD 9B 00 5C ED 99 -- 033850
9A 00 5C ED 99 9A D6 46 DD 9B 00 5C ED 99 9A CE -- 033860
62 C8 57 56 CB 5E 5F C9 9B 52 C4 83 00 2C 2E 45 -- 033870
2E 04 C4 83 00 34 EE 9B 9A 50 F0 46 8D 16 00 00 -- 033880
2E 04 E7 C1 DE 7E 8B DE 46 89 05 8B 38 30 3E C5 -- 033890
D6 5E DD 9B 05 D9 9B 38 4E 1E 8E 2E 38 4C 3E 03 -- 0338A0
9B 08 45 D9 9B 38 4C 3E 03 2E 04 E7 C1 DE 7E 8B -- 0338B0
D9 9B 38 4C 3E 03 2E 04 E7 C1 DE 7E 8B CE 5E DD -- 0338C0
4C 3E 03 2E 04 E7 C1 DE 7E 8B C6 5E DD 9B 04 45 -- 0338D0
F0 46 D9 9B 0A 7E C5 BE 5E DD 9B 0C 45 D9 9B 38 -- 0338E0
9B 04 45 D8 9B F8 46 D9 9B E8 5E D9 9B 05 D8 9B -- 0338F0
9A 1D D8 9B E8 46 D9 9B 37 F8 3E C5 2E EC 5E D9 -- 033900
D9 9B 37 FC 3E C5 2E 01 16 E9 03 76 00 5C ED 94 -- 033910
16 01 00 E9 03 76 00 5C ED 94 9A 1D D8 9B EC 46 -- 033920
C4 83 00 2C 06 C5 9A 50 E0 46 8D 16 50 E8 46 8D -- 033930
5E DD 9B E4 46 D9 9B B6 5E DD 9B E0 46 D9 9B 08 -- 033940
9B E8 5E D9 9B 05 D8 9B F4 46 D9 9B 0A 7E C5 AE -- 033950
37 E4 3E C5 2E EC 5E D9 9B 04 45 D8 9B FC 46 D9 -- 033960
AE E9 03 73 00 5C ED 94 9A 1D D8 9B E8 46 D9 9B -- 033970
ED 94 9A 1D D8 9B EC 46 D9 9B 37 EC 3E C5 2E 00 -- 033980
E0 46 8D 16 50 E8 46 8D 16 00 98 E9 03 73 00 5C -- 033990
5E DD 9B E0 46 D9 9B 08 C4 83 00 2C 06 C5 9A 50 -- 0339A0
76 FF 00 2C 0A 55 9A 9E 5E DD 9B E4 46 D9 9B A6 -- 0339B0
38 22 36 FF 2E 0E 76 FF 00 6A 01 6A 10 76 FF 12 -- 0339C0
```

234

```
9B 37 AC 36 FF 2E 37 AE 36 FF 2E 38 20 36 FF 2E -- 0339D0
5C ED 99 9A A6 46 DD 9B 00 5C ED 99 9A 9E 46 DD -- 0339E0
99 9A B6 46 DD 9B 00 5C ED 99 9A AE 46 DD 9B 00 -- 0339F0
DD 9B 00 5C ED 99 9A BE 46 DD 9B 00 5C ED 01 FE -- 033A00
00 5C ED 99 9A CE 46 DD 9B 00 5C ED 99 9A C6 46 -- 033A10
C4 83 00 2C 2E 45 9A 00 5C ED 99 9A D6 46 DD 9B -- 033A20
8D 16 57 56 00 00 7E C8 57 56 CB 5E 5F C9 9B 52 -- 033A30
00 5C FE EC 9A 08 6A 0E 76 FF 10 76 FF 50 8A 46 -- 033A40
2E 9B 08 75 00 02 3D 05 8B 37 68 3E C5 2E 5E 5F -- 033A50
92 5E D9 9B 38 14 06 DD 2E 9B 06 EB 38 74 06 DD -- 033A60
D8 9B 8A 46 D9 9B B6 46 89 05 8B 38 30 3E C5 2E -- 033A70

5E D9 9B 8A 46 D9 9B 0A 76 00 5C ED 94 9A 8E 5E -- 033A80
00 5C ED 94 9A 8E 5E D8 9B 8A 46 D9 9B 17 EB 8E -- 033A90
D8 9B 92 46 D9 9B 8A 5E D9 9B 8E 46 D9 9B 08 73 -- 033AA0
37 BC 3E C5 2E 37 AC 36 C4 2E 82 5E DD 9B 8A 4E -- 033AB0
9B AE 5E DD 9B 82 76 DC 9B 24 D8 26 9B 05 D9 9B -- 033AC0
37 B4 36 C4 2E 82 5E DD 9B 8E 4E D8 9B 92 46 D9 -- 033AD0
82 76 DC 9B 24 D8 26 9B 05 D9 9B 37 CC 3E C5 2E -- 033AE0
DD 9B 38 74 36 DC 2E 9B AE 46 DD 9B A6 5E DD 9B -- 033AF0
B8 5E D9 9B 82 66 DC 9B 05 D9 9B 0A 7E C5 82 5E -- 033B00
D9 9B 82 5E DD 9B 38 74 36 DC 2E 9B A6 46 DD 9B -- 033B10
16 50 B8 46 8D 16 BC 5E D9 9B 82 66 DC 9B 04 45 -- 033B20
AE 46 DD 9B 08 C4 83 00 2C 06 C5 9A 50 9E 46 8D -- 033B30
05 D9 9B 0A 7E C5 82 5E DD 9B 38 74 36 DC 2E 9B -- 033B40
36 DC 2E 9B A6 46 DD 9B B8 5E D9 9B 82 46 DC 9B -- 033B50
D9 9B 82 46 DC 9B 04 45 D9 9B 82 5E DD 9B 38 74 -- 033B60
2C 06 C5 9A 50 96 46 8D 16 50 B8 46 8D 16 BC 5E -- 033B70
A2 46 D9 9B D8 5E DD 9B 9E 46 D9 9B 08 C4 83 00 -- 033B80
9A 46 D9 9B D0 5E DD 9B 96 46 D9 9B C8 5E DD 9B -- 033B90
F8 5E DD 9B 05 D9 9B 37 AC 3E C5 2E C0 5E DD 9B -- 033BA0
BC 3E C5 2E F0 5E DD 9B 05 D9 9B 37 B4 3E C5 2E -- 033BB0
05 D9 9B 37 CC 3E C5 2E E8 5E DD 9B 05 D9 9B 37 -- 033BC0
6A 14 76 FF 16 76 FF 00 2C 0A 55 9A E0 5E DD 9B -- 033BD0
38 20 36 FF 2E 38 22 36 FF 2E 12 76 FF 01 6A 00 -- 033BE0
99 9A C0 46 DD 9B 37 AC 36 FF 2E 37 AE 36 FF 2E -- 033BF0
DD 9B 00 5C ED 99 9A D0 46 DD 9B 00 5C ED 01 FE -- 033C00
00 5C ED 99 9A D8 46 DD 9B 00 5C ED 99 9A C8 46 -- 033C10
ED 99 9A E8 46 DD 9B 00 5C ED 99 9A E0 46 DD 9B -- 033C20
9A F8 46 DD 9B 00 5C ED 99 9A F0 46 DD 9B 00 5C -- 033C30
5E 5F C9 9B 52 C4 83 00 2C 2E 45 9A 00 5C ED 99 -- 033C40
0E 76 FF 59 75 00 0A 7E 83 00 00 10 C8 57 56 CB -- 033C50
06 03 2E 04 E0 C1 05 8B 38 30 3E C5 2E 0C 76 FF -- 033C60
0C 05 C3 8B 51 CA 8B D8 8B 38 4E 16 8B 2E 38 4C -- 033C70
8B 51 D8 8B 38 4C 06 03 2E 04 E0 C1 05 8B 50 00 -- 033C80
8B 38 4C 06 03 2E 04 E0 C1 05 8B 50 00 08 05 C3 -- 033C90
06 03 2E 04 E0 C1 05 8B 50 00 04 05 C3 8B 51 D8 -- 033CA0
C5 2E 38 7C 36 C4 2E 0A 4E FF 00 BA E9 52 38 4C -- 033CB0
1E 8E 2E 38 4C 3E 03 2E 04 E7 C1 3D 8B 38 30 3E -- 033CC0
9B 04 D8 26 9B 38 74 36 DC 2E 9B 05 D9 9B 38 4E -- 033CD0
3E 03 2E 04 E7 C1 3D 8B 38 30 3E C5 2E F0 5E D9 -- 033CE0
74 36 DC 2E 9B 04 45 D9 9B 38 4E 1E 8E 2E 38 4C -- 033CF0
3D 8B 38 30 3E C5 2E F4 5E D9 9B 04 D8 26 9B 38 -- 033D00
45 D9 9B 38 4E 1E 8E 2E 38 4C 3E 03 2E 04 E7 C1 -- 033D10
F8 5E D9 9B 04 44 D8 26 9B 38 74 36 DC 2E 9B 08 -- 033D20
2E 38 4C 3E 03 2E 04 E7 C1 3D 8B 38 30 3E C5 2E -- 033D30
26 9B 38 74 36 DC 2E 9B 0C 45 D9 9B 38 4E 1E 8E -- 033D40
46 8D 16 0C 76 FF 0E 76 FF FC 5E D9 9B 04 44 D8 -- 033D50
F0 46 8D 16 50 F4 46 8D 16 50 F8 46 8D 16 50 FC -- 033D60
C9 9B 18 C4 83 00 64 40 D0 9A 01 95 68 0A 6A 50 -- 033D70
```

235

```
66 DC 9B 3A 46 DD 9B 00 00 18 C8 57 56 CB 5E 5F -- 033D80
76 DC 9B 0A 66 DC 9B 1A 46 DD 9B E8 5E DD 9B 2A -- 033D90
5E DD 9B 32 66 DC 9B 42 46 DD 9B F8 5E DD 9B E8 -- 033DA0
5E DD 9B E8 76 DC 9B 12 66 DC 9B 22 46 DD 9B E8 -- 033DB0
05 D9 9B 4E 7E C5 00 5C ED 99 9A F8 46 DD 9B F0 -- 033DC0
05 D9 9B 4A 7E C5 50 2A 46 8D 16 00 5C ED 99 9A -- 033DD0
83 00 2C 32 50 9A 50 0A 46 8D 16 00 5C ED 99 9A -- 033DE0
D9 9B 4E 7E C5 00 5C ED 99 9A F0 46 DD 9B 20 C4 -- 033DF0
7E C5 50 32 46 8D 16 00 5C ED 99 9A 08 45 01 FE -- 033E00
9A 50 12 46 8D 16 00 5C ED 99 9A 08 45 D9 9B 4A -- 033E10

00 5C ED 99 9A F8 46 DD 9B 20 C4 83 00 2C 32 50 -- 033E20
3A 46 8D 16 00 5C ED 99 9A 04 45 D9 9B 4E 7E C5 -- 033E30
46 8D 16 00 5C ED 99 9A 04 45 D9 9B 4A 7E C5 50 -- 033E40
99 9A F0 46 DD 9B 20 C4 83 00 2C 33 C0 9A 50 1A -- 033E50
16 00 5C ED 99 9A 0C 45 D9 9B 4E 7E C5 00 5C ED -- 033E60
00 5C ED 99 9A 0C 45 D9 9B 4A 7E C5 50 42 46 8D -- 033E70
56 7E 83 20 C4 83 00 2C 33 C0 9A 50 22 46 8D 16 -- 033E80
0A 5E DC 9B 05 D9 9B 4A 7E C5 00 BD E9 03 74 00 -- 033E90
DC 9B 1A 46 DD 9B 4A 7E C5 4C 73 00 5C ED 94 9A -- 033EA0
0A 5E DD 9B 05 D9 9B 1A 5E DD 9B 05 D8 9B 0A 66 -- 033EB0
04 45 D9 9B 4E 7E C5 00 5C ED 99 9A F8 46 DD 9B -- 033EC0
45 D9 9B 4A 7E C5 50 3A 46 8D 16 00 5C ED 99 9A -- 033ED0
00 2C 33 C0 9A 50 1A 46 8D 16 00 5C ED 99 9A 04 -- 033EE0
94 9A 12 5E DC 9B 08 45 D9 9B 4A 7E C5 20 C4 83 -- 033EF0
12 66 DC 9B 22 46 DD 9B 4A 7E C5 4E 73 00 5C ED -- 033F00
12 5E DD 9B 08 45 D9 9B 22 5E DD 9B 08 45 D8 9B -- 033F10
0C 45 D9 9B 4E 7E C5 00 5C ED 99 9A F0 46 DD 9B -- 033F20
45 D9 9B 4A 7E C5 50 42 46 8D 16 00 5C ED 99 9A -- 033F30
00 2C 33 C0 9A 50 22 46 8D 16 00 5C ED 99 9A 0C -- 033F40
9B 00 5C ED 99 9A 22 46 DD 9B 54 76 FF 20 C4 83 -- 033F50
5C ED 99 9A 12 46 DD 9B 00 5C ED 99 9A 1A 46 DD -- 033F60
99 9A 42 46 DD 9B 00 5C ED 99 9A 0A 46 DD 9B 00 -- 033F70
32 46 DD 9B 00 5C ED 99 9A 3A 46 DD 9B 00 5C ED -- 033F80
7C 9A 00 5C ED 99 9A 2A 46 DD 9B 00 5C ED 99 9A -- 033F90
9A 52 76 FF 58 76 FF 5A 76 FF 42 C4 83 00 2C 30 -- 033FA0
8B 55 57 56 CB 5E 5F C9 9B 06 C4 83 00 2C 0A C8 -- 033FB0
38 44 3E 03 2E 04 E7 C1 3D 8B 38 30 3E C5 2E EC -- 033FC0
30 3E C5 2E 1D D9 9B 0A 46 DD 9B 38 46 1E 8E 2E -- 033FD0
38 46 1E 8E 2E 38 44 3E 03 2E 04 E7 C1 3D 8B 38 -- 033FE0
C1 3D 8B 38 30 3E C5 2E 08 5D D9 9B 12 46 DD 9B -- 033FF0
DD 9B 38 46 1E 8E 2E 38 44 3E 03 2E 04 E7 01 FE -- 034000
04 E7 C1 3D 8B 38 30 3E C5 2E 04 5D D9 9B 1A 46 -- 034010
D9 9B 22 46 DD 9B 38 46 1E 8E 2E 38 44 3E 03 2E -- 034020
4C 3E 03 2E 04 E7 C1 3D 8B 38 30 3E C5 2E 0C 5D -- 034030
3E C5 2E 1D D9 9B 2A 46 DD 9B 38 4E 1E 8E 2E 38 -- 034040
4E 1E 8E 2E 38 4C 3E 03 2E 04 E7 C1 3D 8B 38 30 -- 034050
3D 8B 38 30 3E C5 2E 08 5D D9 9B 32 46 DD 9B 38 -- 034060
46 DD 9B 38 4E 1E 8E 2E 38 4C 3E 03 2E 04 E7 C1 -- 034070
2E 04 E7 C1 3D 8B 38 30 3E C5 2E 04 5D D9 9B 3A -- 034080
5D D9 9B 42 46 DD 9B 38 4E 1E 8E 2E 38 4C 3E 03 -- 034090
2E 00 2C 0A 75 9A 00 E3 E9 03 74 01 4A 7E 83 0C -- 0340A0
8E 2E 38 48 3E 03 2E 04 E7 C1 3D 8B 38 34 3E C5 -- 0340B0
8B 38 34 3E C5 2E 1D D9 9B 0A 46 DD 9B 38 4A 1E -- 0340C0
DD 9B 38 4A 1E 8E 2E 38 48 3E 03 2E 04 E7 C1 3D -- 0340D0
04 E7 C1 3D 8B 38 34 3E C5 2E 08 5D D9 9B 12 46 -- 0340E0
D9 9B 1A 46 DD 9B 38 4A 1E 8E 2E 38 48 3E 03 2E -- 0340F0
48 3E 03 2E 04 E7 C1 3D 8B 38 34 3E C5 2E 04 5D -- 034100
C5 2E 0C 5D D9 9B 22 46 DD 9B 38 4A 1E 8E 2E 38 -- 034110
1E 8E 2E 38 50 3E 03 2E 04 E7 C1 3D 8B 38 34 3E -- 034120
```

```
3D  8B  38  34  3E  C5  2E  1D  D9  9B  2A  46  DD  9B  38  52  --  034130
46  DD  9B  38  52  1E  8E  2E  38  50  3E  03  2E  04  E7  C1  --  034140
2E  04  E7  C1  3D  8B  38  34  3E  C5  2E  08  5D  D9  9B  32  --  034150
5D  D9  9B  3A  46  DD  9B  38  52  1E  8E  2E  38  50  3E  03  --  034160
38  50  3E  03  2E  04  E7  C1  3D  8B  38  34  3E  C5  2E  04  --  034170
5F  C9  9B  0C  5D  D9  9B  42  46  DD  9B  38  52  1E  8E  2E  --  034180
DC  9B  05  DD  9B  0A  7E  C5  00  00  18  C8  57  56  CB  5E  --  034190
9B  16  7E  C5  00  A0  E9  03  77  00  5C  ED  94  9A  0E  5E  --  0341A0
00  8C  E9  03  77  00  5C  ED  94  9A  1A  5E  DC  9B  05  DD  --  0341B0

DD  9B  22  4E  DC  9B  1A  66  DC  9B  05  DD  9B  16  7E  C5  --  0341C0
E8  5E  DC  9B  0E  66  DC  9B  05  DD  9B  0A  7E  C5  E8  5E  --  0341D0
66  DC  9B  05  DD  9B  0A  7E  C5  0C  73  00  5C  ED  94  9A  --  0341E0
4E  DC  9B  1A  66  DC  9B  05  DD  9B  16  7E  C5  0E  EB  0E  --  0341F0
66  DC  9B  05  DD  9B  0A  7E  C5  F8  5E  DD  9B  22  01  FE  --  034200
F8  46  DD  9B  0A  75  00  5C  ED  94  9A  F8  5E  DC  9B  0E  --  034210
1A  66  DC  9B  05  DD  9B  16  7E  C5  0A  EB  22  76  DC  9B  --  034220
DD  9B  F8  66  DC  9B  05  DD  9B  0A  7E  C5  F0  5E  DD  9B  --  034230
7E  C5  00  AE  E9  F0  66  DC  9B  05  DD  9B  16  7E  C5  1D  --  034240
C5  14  72  00  5C  ED  94  9A  0E  5E  DC  9B  05  DD  9B  0A  --  034250
03  72  00  5C  ED  94  9A  1A  5E  DC  9B  05  DD  9B  16  7E  --  034260
4E  DC  9B  25  DC  9B  1A  46  DD  9B  16  7E  C5  00  8C  E9  --  034270
9B  25  DC  9B  0E  46  DD  9B  0A  7E  C5  E8  5E  DD  9B  22  --  034280
46  DD  9B  0A  7E  C5  0C  76  00  5C  ED  94  9A  E8  5E  DC  --  034290
25  DC  9B  1A  46  DD  9B  16  7E  C5  0E  EB  25  DC  9B  0E  --  0342A0
9B  0E  46  DD  9B  0A  7E  C5  F8  5E  DD  9B  22  4E  DC  9B  --  0342B0
46  DD  9B  0A  75  00  5C  ED  94  9A  F8  5E  DC  9B  25  DC  --  0342C0
DC  9B  1A  46  DD  9B  16  7E  C5  0A  EB  22  76  DC  9B  F8  --  0342D0
9B  F8  46  DC  9B  05  DD  9B  0A  7E  C5  F0  5E  DD  9B  25  --  0342E0
9B  1D  DD  9B  F0  46  DC  9B  05  DD  9B  16  7E  C5  1D  DD  --  0342F0
05  DD  9B  0A  7E  C5  00  00  18  C8  57  56  CB  5E  5F  C9  --  034300
7E  C5  00  A0  E9  03  72  00  5C  ED  94  9A  0E  5E  DC  9B  --  034310
E9  03  72  00  5C  ED  94  9A  1A  5E  DC  9B  05  DD  9B  16  --  034320
22  4E  DC  9B  25  DC  9B  1A  46  DD  9B  16  7E  C5  00  8C  --  034330
DC  9B  25  DC  9B  0E  46  DD  9B  0A  7E  C5  E8  5E  DD  9B  --  034340
0E  46  DD  9B  0A  7E  C5  0C  73  00  5C  ED  94  9A  E8  5E  --  034350
9B  25  DC  9B  1A  46  DD  9B  16  7E  C5  0E  EB  25  DC  9B  --  034360
DC  9B  0E  46  DD  9B  0A  7E  C5  F8  5E  DD  9B  22  4E  DC  --  034370
F8  46  DD  9B  0A  75  00  5C  ED  94  9A  F8  5E  DC  9B  25  --  034380
25  DC  9B  1A  46  DD  9B  16  7E  C5  0A  EB  22  76  DC  9B  --  034390
DD  9B  F8  46  DC  9B  05  DD  9B  0A  7E  C5  F0  5E  DD  9B  --  0343A0
7E  C5  00  AE  E9  F0  46  DC  9B  05  DD  9B  16  7E  C5  1D  --  0343B0
C5  14  77  00  5C  ED  94  9A  0E  5E  DC  9B  05  DD  9B  0A  --  0343C0
03  77  00  5C  ED  94  9A  1A  5E  DC  9B  05  DD  9B  16  7E  --  0343D0
4E  DC  9B  1A  66  DC  9B  05  DD  9B  16  7E  C5  00  8C  E9  --  0343E0
9B  0E  66  DC  9B  05  DD  9B  0A  7E  C5  E8  5E  DD  9B  22  --  0343F0
9B  0A  7E  C5  0C  76  00  5C  ED  94  9A  E8  5E  DC  01  FE  --  034400
DC  9B  05  DD  9B  16  7E  C5  0E  EB  0E  66  DC  9B  05  DD  --  034410
05  DD  9B  0A  7E  C5  F8  5E  DD  9B  22  4E  DC  9B  1A  66  --  034420
9B  0A  75  00  5C  ED  94  9A  F8  5E  DC  9B  0E  66  DC  9B  --  034430
9B  05  DD  9B  16  7E  C5  0A  EB  22  76  DC  9B  F8  46  DD  --  034440
66  DC  9B  05  DD  9B  0A  7E  C5  F0  5E  DD  9B  1A  66  DC  --  034450
DD  9B  F0  66  DC  9B  05  DD  9B  16  7E  C5  1D  DD  9B  F8  --  034460
9B  E8  D9  9B  00  00  20  C8  57  56  CB  5E  5F  C9  9B  1D  --  034470
D8  26  9B  0C  45  D9  9B  0A  7E  C5  0A  76  C4  E0  5E  DD  --  034480
5E  DD  9B  E8  D9  9B  FC  5E  D9  9B  E0  46  DC  9B  08  64  --  034490
5E  D9  9B  E0  46  DC  9B  24  D8  26  9B  04  45  D9  9B  E0  --  0344A0
26  9B  05  D9  9B  38  10  3E  C5  2E  38  08  36  C4  2E  F8  --  0344B0
38  1C  3E  C5  2E  38  0C  36  C4  2E  EC  5E  D9  9B  24  D8  --  0344C0
9B  EC  46  D9  9B  E8  5E  D9  9B  24  D8  26  9B  05  D9  9B  --  0344D0
```

```
D9  9B  F8  46  D9  9B  41  76  00  5C  ED  94  9A  E8  5E  D8  --  0344E0
D9  9B  EC  76  D8  9B  E8  4E  D8  9B  F8  46  D9  9B  F0  5E  --  0344F0
76  00  5C  ED  94  9A  FC  5E  D8  9B  F4  46  D9  9B  F4  5E  --  034500
4E  D8  9B  FC  46  D9  9B  F4  5E  D9  9B  FC  46  D9  9B  59  --  034510
9B  FC  46  D9  9B  3F  EB  F0  5E  D9  9B  E8  76  D8  9B  EC  --  034520
9B  E8  76  D8  9B  EC  4E  D8  9B  F8  46  D9  9B  F4  5E  D9  --  034530
00  5C  ED  94  9A  F8  5E  D8  9B  F0  46  D9  9B  F0  5E  D9  --  034540
D8  9B  F8  46  D9  9B  F0  5E  D9  9B  F8  46  D9  9B  18  76  --  034550

2E  00  2C  0A  55  9A  F4  5E  D9  9B  EC  76  D8  9B  E8  4E  --  034560
E7  C1  3D  8B  38  30  3E  C5  2E  05  D9  9B  38  08  3E  C5  --  034570
C5  2E  1D  D9  9B  38  46  1E  8E  2E  38  44  3E  03  2E  04  --  034580
04  E7  C1  3D  8B  38  30  3E  C5  2E  05  D9  9B  38  0C  3E  --  034590
C5  2E  08  5D  D9  9B  38  46  1E  8E  2E  38  44  3E  03  2E  --  0345A0
04  E7  C1  3D  8B  38  30  3E  C5  2E  05  D9  9B  38  10  3E  --  0345B0
C5  2E  04  5D  D9  9B  38  46  1E  8E  2E  38  44  3E  03  2E  --  0345C0
04  E7  C1  3D  8B  38  30  3E  C5  2E  05  D9  9B  38  1C  3E  --  0345D0
7E  C5  0C  5D  D9  9B  38  46  1E  8E  2E  38  44  3E  03  2E  --  0345E0
03  2E  04  E7  C1  3D  8B  38  30  3E  C5  2E  05  D9  9B  0A  --  0345F0
0A  7E  C5  1D  D9  9B  38  4E  1E  8E  2E  38  4C  3E  01  FE  --  034600
03  2E  04  E7  C1  3D  8B  38  30  3E  C5  2E  08  45  D9  9B  --  034610
9B  E8  D9  9B  08  5D  D9  9B  38  4E  1E  8E  2E  38  4C  3E  --  034620
66  DC  9B  F0  46  D8  9B  05  D9  9B  0A  7E  C5  E0  5E  DD  --  034630
2E  04  E7  C1  3D  8B  38  30  3E  C5  2E  04  55  D9  9B  E0  --  034640
E8  D9  9B  04  5D  D9  9B  38  4E  1E  8E  2E  38  4C  3E  03  --  034650
9B  F4  46  D8  9B  08  45  D9  9B  0A  7E  C5  E0  5E  DD  9B  --  034660
E7  C1  3D  8B  38  30  3E  C5  2E  0C  55  D9  9B  E0  66  DC  --  034670
FF  0C  5D  D9  9B  38  4E  1E  8E  2E  38  4C  3E  03  2E  04  --  034680
9B  06  C4  83  00  2C  0A  C8  9A  00  6A  0E  76  FF  10  76  --  034690
00  6C  0D  F8  00  6C  0D  F4  00  6C  0D  D2  CB  5E  5F  C9  --  0346A0
00  6C  0D  E8  00  6C  0D  EC  00  6C  0D  E4  00  6C  0D  88  --  0346B0
40  3C  00  00  00  00  00  00  00  6C  0D  D4  00  6C  0D  F0  --  0346C0
00  6C  0D  D8  40  50  00  00  00  00  00  00  00  6C  0D  DC  --  0346D0
00  00  00  00  00  6C  0D  E0  40  89  78  00  00  00  00  00  --  0346E0
00  6C  0D  76  00  6C  0D  5E  00  6C  0D  6E  40  86  F8  00  --  0346F0
00  00  00  00  00  6C  0D  62  00  6C  0D  72  00  6C  0D  66  --  034700
00  00  00  00  00  6C  0D  6A  00  6C  0D  7A  40  8F  F8  00  --  034710
00  6C  0B  DE  00  6C  0B  EE  00  6C  0D  8A  40  85  E8  00  --  034720
00  6C  0B  F6  00  6C  0B  FA  00  6C  0B  E6  00  6C  0B  F2  --  034730
00  6C  0D  D0  00  6C  0D  CE  00  6C  0B  EA  00  6C  0B  E2  --  034740
00  00  00  00  00  6C  0C  02  00  6C  0C  06  00  6C  0B  FE  --  034750
00  6C  0D  56  00  6C  0D  4E  00  6C  0C  0A  3F  F0  00  00  --  034760
00  6C  0D  80  00  6C  0D  7E  00  6C  0D  5A  00  6C  0D  52  --  034770
00  6C  0C  0E  00  6C  0D  86  00  6C  0D  84  00  6C  0D  82  --  034780
48  E8  A7  1E  00  6C  0C  FE  00  6C  0C  5E  00  6C  0C  AE  --  034790
00  6C  0D  8E  00  6C  0B  DC  00  6C  0B  BA  3F  EF  FF  2E  --  0347A0
00  00  00  00  00  00  00  00  00  00  00  00  00  6C  0D  AE  --  0347B0
C5  2E  00  00  26  C8  57  56  00  6C  0B  BC  40  00  00  00  --  0347C0
C7  6B  D4  3E  C5  2E  09  75  00  03  3D  05  8B  6B  D0  3E  --  0347D0
9A  01  6A  6B  D8  36  FF  2E  6B  DA  36  FF  2E  00  01  05  --  0347E0
00  03  05  C7  6B  DC  3E  C5  2E  06  C4  83  00  64  24  00  --  0347F0
6B  E4  3E  C5  2E  00  00  05  C7  6B  E0  3E  C5  2E  01  FE  --  034800
05  C7  6B  E8  3E  C5  2E  00  00  02  45  C7  00  00  05  C7  --  034810
3E  C5  2E  1D  D9  9B  6B  EC  3E  C5  2E  EE  D9  9B  00  0D  --  034820
C5  2E  19  74  00  3D  80  6B  F4  3E  C5  2E  05  FF  6B  F0  --  034830
9A  6B  F8  36  FF  2E  6B  FA  36  FF  2E  35  FF  6B  F0  3E  --  034840
F0  3E  C5  2E  50  FE  46  8D  16  06  C4  83  00  5C  97  1E  --  034850
0A  C4  83  00  64  40  D0  9A  01  F5  68  03  6A  35  FF  6B  --  034860
C4  83  00  2C  69  97  9A  FE  76  FF  0E  74  00  FE  7E  83  --  034870
6B  FC  3E  C5  2E  05  8B  6B  F0  3E  C5  2E  04  E9  E9  02  --  034880
```

```
3E  C5  2E  1D  D9  9B  6C  00  3E  C5  2E  EE  D9  9B  05  89  --  034890
EE  D9  9B  1D  D9  9B  6C  04  3E  C5  2E  05  D9  9B  6C  08  --  0348A0
05  D9  9B  6C  14  3E  C5  2E  1D  D9  9B  6C  0C  3E  C5  2E  --  0348B0
36  FF  2E  50  FE  46  8D  16  1D  D9  9B  6C  10  3E  C5  2E  --  0348C0
64  40  D0  9A  01  F8  68  04  6A  6C  00  36  FF  2E  6C  02  --  0348D0
69  97  9A  FE  76  FF  0E  74  00  FE  7E  83  0C  C4  83  00  --  0348E0
00  05  C7  6B  FC  3E  C5  2E  04  75  E9  02  C4  83  00  2C  --  0348F0

C7  6C  1C  3E  C5  2E  00  00  05  C7  6C  18  3E  C5  2E  00  --  034900
FF  2E  57  56  00  00  05  C7  6C  20  3E  C5  2E  00  00  05  --  034910
8C  00  02  9A  24  6A  00  6A  6C  24  36  FF  2E  6C  26  36  --  034920
6A  6C  28  36  FF  2E  6C  2A  36  FF  2E  57  56  5E  5F  00  --  034930
2E  36  FF  2E  57  56  5E  5F  00  8C  00  02  9A  24  6A  00  --  034940
5F  00  8C  00  02  9A  24  6A  00  6A  6C  2C  36  FF  2E  6C  --  034950
6A  00  6A  6C  30  36  FF  2E  6C  32  36  FF  2E  57  56  5E  --  034960
03  05  C6  6C  24  3E  C5  2E  5E  5F  00  8C  00  02  9A  24  --  034970
FA  56  89  F8  46  89  6C  36  16  8B  2E  6C  34  06  8B  2E  --  034980
2B  05  88  F8  7E  C5  E4  2A  03  45  88  F8  7E  C5  C0  2B  --  034990
2B  01  45  88  F8  7E  C5  E4  2A  05  45  88  F8  7E  C5  C0  --  0349A0
C5  02  45  88  F8  7E  C5  E4  2A  07  45  88  F8  7E  C5  C0  --  0349B0
2A  0A  45  88  F8  7E  C5  00  FF  B8  00  09  45  C6  F8  7E  --  0349C0
2A  06  45  88  F8  7E  C5  E4  2A  08  45  88  F8  7E  C5  E4  --  0349D0
2E  00  05  C6  6C  38  3E  C5  2E  04  45  88  F8  7E  C5  E4  --  0349E0
04  45  C6  6C  38  3E  C5  2E  00  02  45  C6  6C  38  3E  C5  --  0349F0
28  3E  C5  2E  00  06  45  C6  6C  38  3E  C5  2E  00  01  FE  --  034A00
46  89  6C  3E  16  8B  2E  6C  3C  06  8B  2E  03  05  C6  6C  --  034A10
C5  E4  2A  03  45  88  F8  7E  C5  00  80  B8  FA  56  89  F8  --  034A20
C5  E4  2A  05  45  88  F8  7E  C5  00  80  B8  05  88  F8  7E  --  034A30
E4  2A  07  45  88  F8  7E  C5  00  80  B8  01  45  88  F8  7E  --  034A40
00  FF  B8  FF  09  45  C6  F8  7E  C5  02  45  88  F8  7E  C5  --  034A50
E4  2A  08  45  88  F8  7E  C5  E4  2A  0A  45  88  F8  7E  C5  --  034A60
C5  2E  04  45  88  F8  7E  C5  E4  2A  06  45  88  F8  7E  C5  --  034A70
2E  80  02  45  C6  6C  40  3E  C5  2E  80  05  C6  6C  40  3E  --  034A80
06  45  C6  6C  40  3E  C5  2E  80  04  45  C6  6C  40  3E  C5  --  034A90
FF  2E  50  FE  46  8D  16  16  05  C6  6C  44  3E  C5  2E  FF  --  034AA0
D0  9A  6E  6A  05  6A  01  6A  6C  44  36  FF  2E  6C  46  36  --  034AB0
9A  FE  76  FF  0E  74  00  FE  7E  83  0E  C4  83  00  64  40  --  034AC0
C6  6C  48  3E  C5  2E  02  95  E9  02  C4  83  00  2C  69  97  --  034AD0
05  88  6C  4C  3E  C5  2E  05  8B  6C  50  3E  C5  2E  01  05  --  034AE0
C5  2E  05  88  6C  54  3E  C5  2E  05  8B  6C  50  3E  C5  2E  --  034AF0
3E  C5  2E  05  8B  6C  60  3E  C5  2E  01  05  C6  6C  58  3E  --  034B00
6C  64  3E  C5  2E  05  8B  6C  60  3E  C5  2E  05  88  6C  5C  --  034B10
10  FC  7E  83  FC  46  FF  03  EB  00  00  FC  46  C7  05  88  --  034B20
EB  05  88  FC  46  8B  FC  7E  03  6C  68  3E  C5  2E  0F  74  --  034B30
C7  6C  70  3E  C5  2E  00  00  05  C7  6C  6C  3E  C5  2E  E8  --  034B40
78  3E  C5  2E  00  10  05  C7  6C  74  3E  C5  2E  00  01  05  --  034B50
2E  01  6A  01  6A  12  6A  00  F0  E9  03  75  00  3D  83  6C  --  034B60
FF  2E  6C  7E  36  FF  2E  6C  80  36  FF  2E  6C  82  36  FF  --  034B70
46  8D  16  50  52  0C  C4  83  00  5C  93  FD  9A  6C  7C  36  --  034B80
E8  56  8B  E6  46  8B  0A  C4  83  00  5C  ED  6E  9A  50  E6  --  034B90
6C  2C  36  FF  2E  6C  2E  36  FF  2E  E4  56  89  E2  46  89  --  034BA0
9A  E2  76  FF  E4  76  FF  01  6A  35  FF  6C  60  3E  C5  2E  --  034BB0
30  36  FF  2E  6C  32  36  FF  2E  0C  C4  83  00  64  43  83  --  034BC0
E2  76  FF  E4  76  FF  01  6A  35  FF  6C  50  3E  C5  2E  6C  --  034BD0
2A  05  8A  6C  84  3E  C5  2E  0C  C4  83  00  64  43  83  9A  --  034BE0
2A  05  8A  6C  88  3E  C5  2E  05  88  6C  34  3E  C5  2E  E4  --  034BF0
6C  8C  3E  C5  2E  01  45  88  6C  34  3E  C5  2E  E4  01  FE  --  034C00
90  3E  C5  2E  02  45  88  6C  34  3E  C5  2E  E4  2A  05  8A  --  034C10
94  3E  C5  2E  05  88  6C  3C  3E  C5  2E  E4  2A  05  8A  6C  --  034C20
3E  C5  2E  01  45  88  6C  3C  3E  C5  2E  E4  2A  05  8A  6C  --  034C30
```

239

```
8D 16 02 45 88 6C 3C 3E C5 2E E4 2A 05 8A 6C 98 -- 034C40
00 2C 44 6E 9A 04 C4 83 00 5C 94 D5 9A 50 E6 46 -- 034C50
E9 03 75 00 3D 83 6B D4 3E C5 2E 00 2C 43 65 9A -- 034C60
02 FC 7E 83 FC 46 FF 03 EB 00 00 FC 46 C7 00 F6 -- 034C70
6C 60 3E C5 2E 1C 75 00 FC 7E 83 00 E3 E9 03 75 -- 034C80
0D 05 8B 6C 60 3E C5 2E DF 46 88 00 04 0D 05 8B -- 034C90

04 0D 05 8B 6C 50 3E C5 2E 1A EB DE 46 88 00 F4 -- 034CA0
46 88 00 F4 0D 05 8B 6C 50 3E C5 2E DF 46 88 00 -- 034CB0
C0 2B 50 E4 2A DB 46 88 C0 2B 50 FE 46 8D 16 DE -- 034CC0
8A 50 E4 2A DD 46 88 00 10 B8 50 E4 2A DC 46 88 -- 034CD0
46 88 00 04 B8 50 E4 2A DF 46 8A 50 E4 2A DE 46 -- 034CE0
4F 68 09 6A 50 E4 2A E1 46 88 C0 2B 50 E4 2A E0 -- 034CF0
C0 2B 50 FE 46 8D 16 16 C4 83 00 64 40 D0 9A 01 -- 034D00
B8 50 E4 2A DC 46 88 00 FF B8 50 E4 2A DB 46 88 -- 034D10
46 8A 50 E4 2A DE 46 8A 50 E4 2A DD 46 88 00 10 -- 034D20
88 C0 2B 50 E4 2A E0 46 88 00 03 B8 50 E4 2A DF -- 034D30
83 00 64 40 D0 9A 01 4F 68 09 6A 50 E4 2A E1 46 -- 034D40
97 9A FE 76 FF FF 1E E9 03 75 00 FE 7E 83 16 C4 -- 034D50
00 05 C7 6C 9C 3E C5 2E 09 EB 02 C4 83 00 2C 69 -- 034D60
6A 00 8E 68 00 00 04 C8 57 56 CB 5E 5F C9 9B 00 -- 034D70
0B FE 56 89 FC 46 89 04 C4 83 00 64 4E A1 9A 01 -- 034D80
73 EB 02 C4 83 00 2C 69 97 9A 10 6D 68 0D 75 C2 -- 034D90
8B FC 46 8B 1C 75 05 0B 02 45 8B 6B E4 3E C5 2E -- 034DA0
E4 3E C5 2E 02 55 89 05 89 6C A0 3E C5 2E FE 56 -- 034DB0
8B 3D C5 6C A0 3E C5 2E 3B EB 02 55 89 05 89 6B -- 034DC0
8B 6C A0 3E C5 2E 02 55 89 05 89 FE 56 8B FC 46 -- 034DD0
3E C5 2E 06 55 89 04 45 89 FC 7E C5 02 55 8B 05 -- 034DE0
05 89 6C A0 3E C5 2E 02 55 8B 05 8B 3D C5 6C A0 -- 034DF0
00 00 05 C7 3D C5 6C A0 3E C5 2E 02 55 89 01 FE -- 034E00
2E 00 00 2A C8 57 56 CB 5E 5F C9 00 00 02 45 C7 -- 034E10
2E 05 FF 6B F0 3E C5 2E 00 01 05 C7 6C 9C 3E C5 -- 034E20
35 FF 6B F0 3E C5 2E 19 74 00 3D 80 6B F4 3E C5 -- 034E30
83 00 5C 97 1E 9A 6C A4 36 FF 2E 6C A6 36 FF 2E -- 034E40
03 6A 35 FF 6B F0 3E C5 2E 50 D6 46 8D 16 06 C4 -- 034E50
74 00 D6 7E 83 0A C4 83 00 64 40 D0 9A 01 F5 68 -- 034E60
C5 2E 64 EB 02 C4 83 00 2C 69 97 9A D6 76 FF 0D -- 034E70
D8 46 8D 16 05 89 6B FC 3E C5 2E 05 8B 6B F0 3E -- 034E80
2E 9A 50 D8 46 8D 16 04 C4 83 00 5C E0 79 9A 50 -- 034E90
9B 6C A8 3E C5 2E E8 46 D9 9B 04 C4 83 00 5C 29 -- 034EA0
C5 2E 1D D9 9B 6C AC 3E C5 2E EC 46 D9 9B 1D D9 -- 034EB0
6C A8 3E C5 2E 00 5C ED 99 9A 05 D9 9B 6C AC 3E -- 034EC0
83 00 64 1F 4C 9A 07 6A 00 5C ED 99 9A 05 D9 9B -- 034ED0
46 8D 16 00 00 2E C8 57 56 CB 5E 5F C9 9B 12 C4 -- 034EE0
9A 50 D6 46 8D 16 04 C4 83 00 5C E0 79 9A 50 D6 -- 034EF0
6C B0 3E C5 2E E6 46 D9 9B 04 C4 83 00 5C 29 2E -- 034F00
2E 1D D9 9B 6C B4 3E C5 2E EA 46 D9 9B 1D D9 9B -- 034F10
B0 3E C5 2E 00 5C ED 99 9A 05 D9 9B 6C B4 3E C5 -- 034F20
00 64 1F 4C 9A 07 6A 00 5C ED 99 9A 05 D9 9B 6C -- 034F30
05 D9 9B 6C A8 3E C5 2E 6C B0 36 C4 2E 12 C4 83 -- 034F40
6C A8 3E C5 2E 0A 73 00 5C ED 94 9A 1C D8 26 9B -- 034F50
3E C5 2E 05 D9 9B 6C B0 3E C5 2E 08 EB 05 D9 9B -- 034F60
9B 6C AC 3E C5 2E 6C B4 36 C4 2E 1D D9 9B 6C B8 -- 034F70
3E C5 2E 0A 73 00 5C ED 94 9A 1C D8 26 9B 05 D9 -- 034F80
2E 05 D9 9B 6C B4 3E C5 2E 08 EB 05 D9 9B 6C AC -- 034F90
A8 3E C5 2E 6C B0 36 C4 2E 1D D9 9B 6C BC 3E C5 -- 034FA0
2E 0A 76 00 5C ED 94 9A 1C D8 26 9B 05 D9 9B 6C -- 034FB0
D9 9B 6C B0 3E C5 2E 08 EB 05 D9 9B 6C A8 3E C5 -- 034FC0
2E 6C B4 36 C4 2E 04 5D D9 9B 6C B8 3E C5 2E 05 -- 034FD0
00 5C ED 94 9A 1C D8 26 9B 05 D9 9B 6C AC 3E C5 -- 034FE0
```

240

```
B4 3E C5 2E 08 EB 05 D9 9B 6C AC 3E C5 2E 0A 76 -- 034FF0
9A 04 5D D9 9B 6C BC 3E C5 2E 05 D9 9B 6C 01 FE -- 035000
14 05 02 55 8B 05 8B 6C A0 3E C5 2E 00 2C 3E 28 -- 035010
45 C6 3D C5 6C A0 3E C5 2E D4 56 89 D2 46 89 00 -- 035020
C5 6C A0 3E C5 2E 05 D9 9B 6C BC 3E C5 2E 0D 12 -- 035030

B8 3E C5 2E 38 5D D9 9B D2 7E C5 5E 55 D9 9B 3D -- 035040
C5 5A 55 D9 9B 3D C5 6C A0 3E C5 2E 05 D9 9B 6C -- 035050
6C BC 3E C5 2E 6C BC 36 C4 2E 34 5D D9 9B D2 7E -- 035060
9B 3D C5 6C A0 3E C5 2E 24 D8 26 9B 04 45 D9 9B -- 035070
2E 6C B8 36 C4 2E 3C 5D D9 9B D2 7E C5 62 55 D9 -- 035080
A0 3E C5 2E 24 D8 26 9B 04 45 D9 9B 6C B8 3E C5 -- 035090
7E C5 40 5D D9 9B D2 7E C5 66 55 D9 9B 3D C5 6C -- 0350A0
C6 D2 7E C5 00 04 45 C6 D2 7E C5 00 03 45 C6 D2 -- 0350B0
07 45 C6 D2 7E C5 00 06 45 C6 D2 7E C5 00 05 45 -- 0350C0
05 8B 6C C0 3E C5 2E 00 00 08 45 C7 D2 7E C5 00 -- 0350D0
3E C5 2E 05 8B 6C C0 3E C5 2E 0A 45 89 D2 7E C5 -- 0350E0
B0 36 FF 2E 6C B2 36 FF 2E 1E 45 89 3D C5 6C A0 -- 0350F0
00 2C 6B 80 9A 6C B4 36 FF 2E 6C B6 36 FF 2E 6C -- 035100
3E C5 2E 50 FE 46 8D 16 00 2C 69 F5 9A 08 C4 83 -- 035110
C4 83 00 64 40 D0 9A 01 FA 68 03 6A 35 FF 6B F0 -- 035120
83 00 2C 69 97 9A FE 76 FF 0E 74 00 FE 7E 83 0A -- 035130
FC 3E C5 2E 05 8B 6B F0 3E C5 2E 01 6D E9 02 C4 -- 035140
6A 35 FF 6C 18 3E C5 2E 50 FE 46 8D 16 05 89 6B -- 035150
00 FE 7E 83 0A C4 83 00 64 40 D0 9A 02 02 68 03 -- 035160
01 32 E9 02 C4 83 00 2C 69 97 9A FE 76 FF 0E 74 -- 035170
74 00 3D 83 6B D4 3E C5 2E 05 FF 6C 18 3E C5 2E -- 035180
FF 2E 50 FE 46 8D 16 0B 05 C6 6C 44 3E C5 2E 39 -- 035190
D0 9A 6E 6A 05 6A 01 6A 6C 44 36 FF 2E 6C 46 36 -- 0351A0
9A FE 76 FF 0E 74 00 FE 7E 83 0E C4 83 00 64 40 -- 0351B0
2E 6C 60 36 C4 2E 00 E8 E9 02 C4 83 00 2C 69 97 -- 0351C0
50 FE 46 8D 16 50 75 04 3B 26 05 8B 6C C0 3E C5 -- 0351D0
2E 6C 5A 36 FF 2E 6B EC 36 FF 2E 6B EE 36 FF 2E -- 0351E0
FF 2E 6C BC 36 FF 2E 6C BE 36 FF 2E 6C 58 36 FF -- 0351F0
CC 68 0B 6A 01 6A 6C B8 36 FF 2E 6C BA 36 01 FE -- 035200
FF 5D 74 00 FE 7E 83 1A C4 83 00 64 40 D0 9A 00 -- 035210
46 8D 16 00 87 E9 02 C4 83 00 2C 69 97 9A FE 76 -- 035220
4A 36 FF 2E 6B EC 36 FF 2E 6B EE 36 FF 2E 50 FE -- 035230
6C BC 36 FF 2E 6C BE 36 FF 2E 6C 48 36 FF 2E 6C -- 035240
CC 68 0B 6A 01 6A 6C B8 36 FF 2E 6C BA 36 FF 2E -- 035250
FF 0D 74 00 FE 7E 83 1A C4 83 00 64 40 D0 9A 00 -- 035260
FE 46 8D 16 38 EB 02 C4 83 00 2C 69 97 9A FE 76 -- 035270
01 F8 68 04 6A 6C 00 36 FF 2E 6C 02 36 FF 2E 50 -- 035280
76 FF 0D 74 00 FE 7E 83 0C C4 83 00 64 40 D0 9A -- 035290
6B FC 3E C5 2E 09 EB 02 C4 83 00 2C 69 97 9A FE -- 0352A0
2E 00 00 02 C8 57 56 CB 5E 5F C9 9B 00 00 05 C7 -- 0352B0
2E FF 05 C6 6C C8 3E C5 2E 07 05 C6 6C C4 3E C5 -- 0352C0
02 45 C6 6C C8 3E C5 2E 00 01 45 C6 6C C8 3E C5 -- 0352D0
6C C4 36 FF 2E 6C C6 36 FF 2E 50 FE 46 8D 16 00 -- 0352E0
06 6A 35 FF 6C 1C 3E C5 2E 35 FF 6C 20 3E C5 2E -- 0352F0
74 00 FE 7E 83 10 C4 83 00 64 40 D0 9A 01 32 68 -- 035300
2E 00 9F E9 02 C4 83 00 2C 69 97 9A FE 76 FF 0E -- 035310
6A 36 FF 2E 50 FE 46 8D 16 07 05 C6 6C CC 3E C5 -- 035320
6C CC 36 FF 2E 6C CE 36 FF 2E 6C 68 36 FF 2E 6C -- 035330
00 6A 35 FF 6C 70 3E C5 2E 35 FF 6C 74 3E C5 2E -- 035340
83 18 C4 83 00 64 40 D0 9A 01 43 68 0A 6A 00 6A -- 035350
02 C4 83 00 2C 69 97 9A FE 76 FF 0D 74 00 FE 7E -- 035360
D0 9A 01 2D 68 03 6A 07 6A 50 FE 46 8D 16 4C EB -- 035370
9A FE 76 FF 0D 74 00 FE 7E 83 0A C4 83 00 64 40 -- 035380
07 6A 50 FE 46 8D 16 25 EB 02 C4 83 00 2C 69 97 -- 035390
```

241

```
FE 7E 83 0A C4 83 00 64 40 D0 9A 01 2F 68 03 6A -- 0353A0
5F C9 02 C4 83 00 2C 69 97 9A FE 76 FF 0B 74 00 -- 0353B0
2E 05 8B 6C 60 3E C5 2E 00 00 0A C8 57 56 CB 5E -- 0353C0
03 75 00 3D 83 6B D4 3E C5 2E 05 89 6C C0 3E C5 -- 0353D0

3E C5 2E FB 46 88 05 8B 6C 60 3E C5 2E 01 34 E9 -- 0353E0
2B 50 FE 46 8D 16 FA 46 88 00 F0 0D 05 8B 6C 60 -- 0353F0
E4 2A F8 46 88 C0 2B 50 E4 2A F7 46 88 C0 01 FE -- 035400
50 E4 2A FA 46 8A 50 E4 2A F9 46 88 00 10 B8 50 -- 035410
2B 50 E4 2A FC 46 88 00 04 B8 50 E4 2A FB 46 8A -- 035420
64 40 D0 9A 01 4F 68 09 6A 50 E4 2A FD 46 88 C0 -- 035430
2A F7 46 88 00 04 B8 50 FE 46 8D 16 16 C4 83 00 -- 035440
46 88 00 10 B8 50 E4 2A F8 46 88 00 C1 B8 50 E4 -- 035450
50 E4 2A FB 46 8A 50 E4 2A FA 46 8A 50 E4 2A F9 -- 035460
E4 2A FD 46 88 C0 2B 50 E4 2A FC 46 88 00 01 B8 -- 035470
7E 83 16 C4 83 00 64 40 D0 9A 01 4F 68 09 6A 50 -- 035480
E9 02 C4 83 00 2C 69 97 9A FE 76 FF 0E 74 00 FE -- 035490
50 3E C5 2E FB 46 88 05 8B 6C 50 3E C5 2E 02 3A -- 0354A0
10 B8 50 FE 46 8D 16 FA 46 88 00 F0 0D 05 8B 6C -- 0354B0
B8 50 E4 2A F8 46 88 C0 2B 50 E4 2A F7 46 88 00 -- 0354C0
46 8A 50 E4 2A FA 46 8A 50 E4 2A F9 46 88 00 10 -- 0354D0
88 C0 2B 50 E4 2A FC 46 88 00 04 B8 50 E4 2A FB -- 0354E0
83 00 64 40 D0 9A 01 4F 68 09 6A 50 E4 2A FD 46 -- 0354F0
97 9A FE 76 FF 01 BA E9 03 75 00 FE 7E 83 16 C4 -- 035500
05 8B 6C 50 3E C5 2E 01 C3 E9 02 C4 83 00 2C 69 -- 035510
2E 00 05 C6 6C C8 3E C5 2E 05 88 6C C4 3E C5 2E -- 035520
02 45 C6 6C C8 3E C5 2E 00 01 45 C6 6C C8 3E C5 -- 035530
6C C4 36 FF 2E 6C C6 36 FF 2E 50 FE 46 8D 16 00 -- 035540
06 6A 35 FF 6C 1C 3E C5 2E 35 FF 6C 20 3E C5 2E -- 035550
74 00 FE 7E 83 10 C4 83 00 64 40 D0 9A 01 32 68 -- 035560
2E 01 5D E9 02 C4 83 00 2C 69 97 9A FE 76 FF 0E -- 035570
3E C5 2E 05 88 6C C4 3E C5 2E 05 8B 6C 60 3E C5 -- 035580
C5 2E 80 01 45 C6 6C C8 3E C5 2E 80 05 C6 6C C8 -- 035590
C6 36 FF 2E 50 FE 46 8D 16 80 02 45 C6 6C C8 3E -- 0355A0
3E C5 2E 35 FF 6C 20 3E C5 2E 6C C4 36 FF 2E 6C -- 0355B0
C4 83 00 64 40 D0 9A 01 32 68 06 6A 35 FF 6C 1C -- 0355C0
83 00 2C 69 97 9A FE 76 FF 0E 74 00 FE 7E 83 10 -- 0355D0
C5 2E E4 2A 05 8A 6C D4 3E C5 2E 00 F7 E9 02 C4 -- 0355E0
CC 3E C5 2E 05 8B 6C 50 3E C5 2E 05 89 6C D0 3E -- 0355F0
2E 6C 6A 36 FF 2E 50 FE 46 8D 16 05 88 6C 01 FE -- 035600
C5 2E 6C CC 36 FF 2E 6C CE 36 FF 2E 6C 68 36 FF -- 035610
D0 3E C5 2E 35 FF 6C 70 3E C5 2E 35 FF 6C 74 3E -- 035620
9A 01 43 68 0A 6A 35 FF 6C 6C 3E C5 2E 35 FF 6C -- 035630
FE 76 FF 0E 74 00 FE 7E 83 18 C4 83 00 64 40 D0 -- 035640
6C D0 3E C5 2E 00 83 E9 02 C4 83 00 2C 69 97 9A -- 035650
6C CC 3E C5 2E 05 8B 6C 60 3E C5 2E 00 00 05 C7 -- 035660
68 36 FF 2E 6C 6A 36 FF 2E 50 FE 46 8D 16 05 88 -- 035670
6C 74 3E C5 2E 6C CC 36 FF 2E 6C CE 36 FF 2E 6C -- 035680
35 FF 6C D0 3E C5 2E 35 FF 6C 70 3E C5 2E 35 FF -- 035690
64 40 D0 9A 01 43 68 0A 6A 35 FF 6C 6C 3E C5 2E -- 0356A0
69 97 9A FE 76 FF 0D 74 00 FE 7E 83 18 C4 83 00 -- 0356B0
C5 2E 05 8B 6C 60 3E C5 2E 17 EB 02 C4 83 00 2C -- 0356C0
5F C9 00 01 05 C7 6C DC 3E C5 2E 05 88 6C D8 3E -- 0356D0
2E 05 8B 6C 50 3E C5 2E 00 00 0A C8 57 56 CB 5E -- 0356E0
03 75 00 3D 83 6B D4 3E C5 2E 05 89 6C C0 3E C5 -- 0356F0
3E C5 2E FB 46 88 05 8B 6C 50 3E C5 2E 01 34 E9 -- 035700
2B 50 FE 46 8D 16 FA 46 88 00 F0 0D 05 8B 6C 50 -- 035710
B8 50 E4 2A F8 46 88 C0 2B 50 E4 2A F7 46 88 C0 -- 035720
46 8A 50 E4 2A FA 46 8A 50 E4 2A F9 46 88 00 10 -- 035730
88 C0 2B 50 E4 2A FC 46 88 00 04 B8 50 E4 2A FB -- 035740
```

242

EP 0 533 348 A2

```
83 00 64 40 D0 9A 01 4F 68 09 6A 50 E4 2A FD 46 -- 035750
50 E4 2A F7 46 88 00 04 B8 50 FE 46 8D 16 16 C4 -- 035760
2A F9 46 88 00 10 B8 50 E4 2A F8 46 88 00 C1 B8 -- 035770

01 B8 50 E4 2A FB 46 8A 50 E4 2A FA 46 8A 50 E4 -- 035780
6A 50 E4 2A FD 46 88 C0 2B 50 E4 2A FC 46 88 00 -- 035790
00 FE 7E 83 16 C4 83 00 64 40 D0 9A 01 4F 68 09 -- 0357A0
02 3A E9 02 C4 83 00 2C 69 97 9A FE 76 FF 0E 74 -- 0357B0
8B 6C 60 3E C5 2E FB 46 88 05 8B 6C 60 3E C5 2E -- 0357C0
88 00 10 B8 50 FE 46 8D 16 FA 46 88 00 F0 0D 05 -- 0357D0
00 10 B8 50 E4 2A F8 46 88 C0 2B 50 E4 2A F7 46 -- 0357E0
2A FB 46 8A 50 E4 2A FA 46 8A 50 E4 2A F9 46 88 -- 0357F0
88 C0 2B 50 E4 2A FC 46 88 00 04 B8 50 E4 01 FE -- 035800
83 00 64 40 D0 9A 01 4F 68 09 6A 50 E4 2A FD 46 -- 035810
97 9A FE 76 FF 01 BA E9 03 75 00 FE 7E 83 16 C4 -- 035820
05 8B 6C 50 3E C5 2E 01 C3 E9 02 C4 83 00 2C 69 -- 035830
2E 80 05 C6 6C C8 3E C5 2E 05 88 6C C4 3E C5 2E -- 035840
02 45 C6 6C C8 3E C5 2E 80 01 45 C6 6C C8 3E C5 -- 035850
6C C4 36 FF 2E 6C C6 36 FF 2E 50 FE 46 8D 16 80 -- 035860
06 6A 35 FF 6C 1C 3E C5 2E 35 FF 6C 20 3E C5 2E -- 035870
74 00 FE 7E 83 10 C4 83 00 64 40 D0 9A 01 32 68 -- 035880
2E 01 5D E9 02 C4 83 00 2C 69 97 9A FE 76 FF 0E -- 035890
3E C5 2E 05 88 6C C4 3E C5 2E 05 8B 6C 60 3E C5 -- 0358A0
C5 2E 00 01 45 C6 6C C8 3E C5 2E 00 05 C6 6C C8 -- 0358B0
C6 36 FF 2E 50 FE 46 8D 16 00 02 45 C6 6C C8 3E -- 0358C0
3E C5 2E 35 FF 6C 20 3E C5 2E 6C C4 36 FF 2E 6C -- 0358D0
C4 83 00 64 40 D0 9A 01 32 68 06 6A 35 FF 6C 1C -- 0358E0
83 00 2C 69 97 9A FE 76 FF 0E 74 00 FE 7E 83 10 -- 0358F0
C5 2E E4 2A 05 8A 6C D4 3E C5 2E 00 F7 E9 02 C4 -- 035900
CC 3E C5 2E 05 8B 6C 60 3E C5 2E 05 89 6C D0 3E -- 035910
36 FF 2E 6C 6A 36 FF 2E 50 FE 46 8D 16 05 88 6C -- 035920
74 3E C5 2E 6C CC 36 FF 2E 6C CE 36 FF 2E 6C 68 -- 035930
FF 6C D0 3E C5 2E 35 FF 6C 70 3E C5 2E 35 FF 6C -- 035940
40 D0 9A 01 43 68 0A 6A 35 FF 6C 6C 3E C5 2E 35 -- 035950
97 9A FE 76 FF 0E 74 00 FE 7E 83 18 C4 83 00 64 -- 035960
05 C7 6C D0 3E C5 2E 00 83 E9 02 C4 83 00 2C 69 -- 035970
05 88 6C CC 3E C5 2E 05 8B 6C 50 3E C5 2E 00 00 -- 035980
2E 6C 68 36 FF 2E 6C 6A 36 FF 2E 50 FE 46 8D 16 -- 035990
35 FF 6C 74 3E C5 2E 6C CC 36 FF 2E 6C CE 36 FF -- 0359A0
C5 2E 35 FF 6C D0 3E C5 2E 35 FF 6C 70 3E C5 2E -- 0359B0
83 00 64 40 D0 9A 01 43 68 0A 6A 35 FF 6C 6C 3E -- 0359C0
00 2C 69 97 9A FE 76 FF 0D 74 00 FE 7E 83 18 C4 -- 0359D0
D8 3E C5 2E 05 8B 6C 50 3E C5 2E 17 EB 02 C4 83 -- 0359E0
CB 5E 5F C9 00 01 05 C7 6C DC 3E C5 2E 05 88 6C -- 0359F0
8B 05 8B 6B E4 3E C5 2E 00 00 04 C8 57 56 01 FE -- 035A00
A0 3E C5 2E 02 55 89 05 89 6C A0 3E C5 2E 02 55 -- 035A10
3C C5 26 6C A0 36 C4 2E 6E 74 05 0B 02 45 8B 6C -- 035A20
0C 75 FF 3D C5 6C A0 3E C5 2E 2A 75 10 12 7D 80 -- 035A30
6C A0 3E C5 2E 04 C4 83 00 64 4E E3 9A 0A 75 FF -- 035A40
04 C4 83 00 64 4E E3 9A 0E 75 FF 10 75 FF 3D C5 -- 035A50
FE 56 89 FC 46 89 02 55 8B 05 8B 6C A0 3E C5 2E -- 035A60
A0 3E C5 2E 02 55 8B 05 8B 3D C5 6C A0 3E C5 2E -- 035A70
64 4E E3 9A FC 76 FF FE 76 FF 02 55 89 05 89 6C -- 035A80
C7 00 00 05 C7 6B E4 3E C5 2E 86 EB 04 C4 83 00 -- 035A90
C5 2E 00 00 04 C8 57 56 CB 5E 5F C9 00 00 02 45 -- 035AA0
46 8D 16 00 05 FC 46 C7 39 74 00 3D 83 6B E0 3E -- 035AB0
2D 68 02 6A 35 FF 6C E0 3E C5 2E FC 76 FF 50 FE -- 035AC0
FF 0D 74 00 FE 7E 83 0C C4 83 00 64 3D BA 9A 01 -- 035AD0
2C 60 5B 9A 1E EB 02 C4 83 00 2C 69 97 9A FE 76 -- 035AE0
00 2C 44 6E 9A 00 2C 4B B2 9A 00 2C 69 F5 9A 00 -- 035AF0
```

243

```
57 56 CB 5E 5F C9 00 54 47 78 9A 00 2C 6A 32 9A -- 035B00
9A 6F 6A 03 6A 03 6A 50 FE 46 8D 16 00 00 02 C8 -- 035B10

74 00 3D 83 6B D4 3E C5 2E 0A C4 83 00 64 40 D0 -- 035B20
64 40 D0 9A 6F 6A 03 6A 0C 6A 50 FE 46 8D 16 13 -- 035B30
35 FF 6B F0 3E C5 2E 50 FE 46 8D 16 0A C4 83 00 -- 035B40
FE 7E 83 0A C4 83 00 64 40 D0 9A 01 F6 68 03 6A -- 035B50
38 EB 02 C4 83 00 2C 69 97 9A FE 76 FF 0D 74 00 -- 035B60
74 00 3D 80 6B F4 3E C5 2E 0D FF 6B F0 3E C5 2E -- 035B70
36 FF 2E 6C E6 36 FF 2E 35 FF 6B F0 3E C5 2E 19 -- 035B80
C7 6B DC 3E C5 2E 06 C4 83 00 5C 97 1E 9A 6C E4 -- 035B90
02 C8 57 56 CB 5E 5F C9 00 2C 4A A6 9A 00 00 05 -- 035BA0
FF 2E 00 6A 00 6A 00 6A 00 6A 00 6A 00 6A 00 00 -- 035BB0
10 C4 83 00 5C A2 86 9A 6C E8 36 FF 2E 6C EA 36 -- 035BC0
6A 00 6A 00 6A 00 6A 13 74 00 FE 7E 83 FE 46 89 -- 035BD0
FF 0C 76 FF 0A C4 83 00 64 28 52 9A FE 76 FF 00 -- 035BE0
00 6A 00 6A 00 6A 04 C4 83 00 2C 4C C3 9A 0A 76 -- 035BF0
36 FF 2E 6C EE 36 FF 2E 00 6A 00 6A 00 6A 01 FE -- 035C00
5E 5F C9 FE 46 89 10 C4 83 00 5C A2 86 9A 6C EC -- 035C10
C7 0A 7E C5 00 54 C8 1C 9A 00 01 4C C8 57 56 CB -- 035C20
0C 76 FF 0E 74 00 3D 83 6B E0 3E C5 2E 00 01 05 -- 035C30
00 2C 69 F5 9A 04 C4 83 00 2C 62 36 9A 0A 76 FF -- 035C40
2E 00 A9 E9 03 74 05 0B 02 45 8B 6B E4 3E C5 2E -- 035C50
03 75 04 3B 26 05 8B 6C C0 3E C5 2E 6C 60 36 C4 -- 035C60
0F A4 E9 03 75 00 3D 83 6C 78 3E C5 2E 0F B1 E9 -- 035C70
2E 6C 82 36 FF 2E 12 6A 12 6A 00 00 FF 1A 86 C7 -- 035C80
6E 9A 6C F0 36 FF 2E 6C F2 36 FF 2E 6C 80 36 FF -- 035C90
ED 6E 9A 50 DC 46 8D 16 50 52 0A C4 83 00 5C ED -- 035CA0
F8 36 FF 2E 6C FA 36 FF 2E 12 6A 0A C4 83 00 5C -- 035CB0
00 5C ED 6E 9A 6C F4 36 FF 2E 6C F6 36 FF 2E 6C -- 035CC0
2E 6C F8 36 FF 2E 6C FA 36 FF 2E 01 6A 0A C4 83 -- 035CD0
C4 83 00 5C 94 FB 9A 6C 7C 36 FF 2E 6C 7E 36 FF -- 035CE0
69 97 9A F2 76 FF 14 74 00 F2 7E 83 F2 46 89 0A -- 035CF0
C4 2E 00 01 FF 1A 86 C7 0F 1C E9 02 C4 83 00 2C -- 035D00
2E 1F 75 04 3B 26 05 8B 6C C0 3E C5 2E 6C 60 36 -- 035D10
05 8B 6C 50 3E C5 2E 0D 74 00 3D 83 6C 78 3E C5 -- 035D20
24 6A 77 EB 00 01 FF 20 86 C7 7F EB FF 20 86 89 -- 035D30
2E 6C FE 36 FF 2E 6C 24 36 FF 2E 6C 26 36 FF 2E -- 035D40
FF 2E 24 6A 0A C4 83 00 5C ED 6E 9A 6C FC 36 FF -- 035D50
36 FF 2E 6C 26 36 FF 2E 6C 28 36 FF 2E 6C 2A 36 -- 035D60
FE 36 FF 2E 24 6A 0A C4 83 00 5C ED 6E 9A 6C 24 -- 035D70
6C 28 36 FF 2E 6C 2A 36 FF 2E 6C FC 36 FF 2E 6C -- 035D80
00 3D 83 6C 78 3E C5 2E 0A C4 83 00 5C ED 6E 9A -- 035D90
C7 06 EB FF 20 86 89 05 8B 6C 60 3E C5 2E 0D 74 -- 035DA0
24 36 FF 2E 6C 26 36 FF 2E 24 6A 00 02 FF 20 86 -- 035DB0
00 5C ED 6E 9A 6D 00 36 FF 2E 6D 02 36 FF 2E 6C -- 035DC0
08 3E C5 2E 00 00 05 C7 6D 04 3E C5 2E 0A C4 83 -- 035DD0
6D 0C 36 FF 2E 6D 0E 36 FF 2E 57 56 02 05 C6 6D -- 035DE0
08 3E C5 2E 5E 5F 00 8C 00 02 9A 02 4E 68 00 6A -- 035DF0
2E 15 5D D9 9B 6D 10 3E C5 2E 05 D9 9B 6C 01 FE -- 035E00
11 5D D9 9B 6D 10 3E C5 2E 05 D9 9B 6C 14 3E C5 -- 035E10
83 6C 78 3E C5 2E 08 87 E9 03 75 00 FF 1A BE 83 -- 035E20
36 FF 2E 02 6A 01 6A 12 6A 01 5F E9 03 75 00 3D -- 035E30
7C 36 FF 2E 6C 7E 36 FF 2E 6C 80 36 FF 2E 6C 82 -- 035E40
FF 26 86 8D 16 50 52 0C C4 83 00 5C 93 FD 9A 6C -- 035E50
28 96 8B FF 26 86 8B 0A C4 83 00 5C ED 6E 9A 50 -- 035E60
40 3E C5 2E 00 FF B8 FF 24 96 89 FF 22 86 89 FF -- 035E70
E4 2A 05 45 88 6C 40 3E C5 2E E4 2A 07 45 88 6C -- 035E80
88 6C 40 3E C5 2E E4 2A 03 45 88 6C 40 3E C5 2E -- 035E90
3E C5 2E 00 FF B8 03 05 C6 6C 2C 3E C5 2E 01 45 -- 035EA0
```

244

```
2A  05  45  88  6C  38  3E  C5  2E  E4  2A  07  45  88  6C  38  --  035EB0
6C  38  3E  C5  2E  E4  2A  03  45  88  6C  38  3E  C5  2E  E4  --  035EC0
6C  60  36  C4  2E  03  05  C6  6C  30  3E  C5  2E  01  45  88  --  035ED0
50  3E  C5  2E  18  75  04  3B  26  05  8B  6C  C0  3E  C5  2E  --  035EE0
86  89  05  8B  6C  60  3E  C5  2E  FF  1C  86  89  05  8B  6C  --  035EF0
2E  FF  1C  86  89  05  8B  6C  60  3E  C5  2E  16  EB  FF  1E  --  035F00
2E  6C  32  36  FF  2E  FF  1E  86  89  05  8B  6C  50  3E  C5  --  035F10
B6  FF  FF  24  B6  FF  01  6A  FF  1C  B6  FF  6C  30  36  FF  --  035F20
F2  7E  83  F2  46  89  0C  C4  83  00  64  43  96  9A  FF  22  --  035F30
D5  E9  02  C4  83  00  2C  69  97  9A  F2  76  FF  0E  74  00  --  035F40
6A  FF  1E  B6  FF  6C  2C  36  FF  2E  6C  2E  36  FF  2E  0C  --  035F50
C4  83  00  64  43  96  9A  FF  22  B6  FF  FF  24  B6  FF  01  --  035F60
69  97  9A  F2  76  FF  0E  74  00  F2  7E  83  F2  46  89  0C  --  035F70
D5  9A  50  FF  26  86  8D  16  0C  9E  E9  02  C4  83  00  2C  --  035F80
6D  14  36  FF  2E  6D  16  36  FF  2E  04  C4  83  00  5C  94  --  035F90
03  05  C7  6D  18  3E  C5  2E  04  C4  83  00  5C  D3  78  9A  --  035FA0
36  FF  2E  6D  04  36  FF  2E  6D  06  36  FF  2E  12  6A  00  --  035FB0
7C  36  FF  2E  6C  7E  36  FF  2E  6D  14  36  FF  2E  6D  16  --  035FC0
6D  1E  36  FF  2E  50  52  0C  C4  83  00  5C  94  8D  9A  6C  --  035FD0
3E  C5  2E  0A  C4  83  00  5C  ED  6E  9A  6D  1C  36  FF  2E  --  035FE0
97  9A  35  FF  6D  20  3E  C5  2E  12  74  00  3D  83  6D  20  --  035FF0
6D  1C  3E  C5  2E  0C  1D  E9  02  C4  83  00  2C  69  01  FE  --  036000
C7  02  55  89  05  89  6D  24  3E  C5  2E  02  55  8B  05  8B  --  036010
FF  2E  6D  00  36  FF  2E  6D  02  36  FF  2E  00  01  F8  46  --  036020
00  5C  48  F8  9A  F8  76  FF  6D  0C  36  FF  2E  6D  0E  36  --  036030
9A  F2  76  FF  0E  74  00  F2  7E  83  F2  46  89  0A  C4  83  --  036040
83  6C  78  3E  C5  2E  0B  CE  E9  02  C4  83  00  2C  69  97  --  036050
5C  CB  9A  50  FF  4A  86  8D  16  00  9F  E9  03  75  00  3D  --  036060
7C  36  FF  2E  6C  7E  36  FF  2E  66  6A  04  C4  83  00  2C  --  036070
6A  0A  C4  83  00  5C  ED  6E  9A  50  FE  B4  86  8D  16  6C  --  036080
FF  08  86  8D  16  6C  80  36  FF  2E  6C  82  36  FF  2E  12  --  036090
16  50  FF  68  86  8D  16  0A  C4  83  00  5C  ED  6E  9A  50  --  0360A0
9A  6D  28  36  FF  2E  6D  2A  36  FF  2E  50  FE  B4  86  8D  --  0360B0
16  00  6A  00  6A  00  6A  00  6A  0C  C4  83  00  5C  4A  15  --  0360C0
9A  6D  0C  36  FF  2E  6D  0E  36  FF  2E  50  FF  4A  86  8D  --  0360D0
0E  74  00  F2  7E  83  F2  46  89  10  C4  83  00  5C  48  60  --  0360E0
86  C7  0B  2A  E9  02  C4  83  00  2C  69  97  9A  F2  76  FF  --  0360F0
E4  3E  C5  2E  00  01  FF  40  86  C7  06  EB  00  02  FF  40  --  036100
02  55  89  05  89  6C  A0  3E  C5  2E  02  55  8B  05  8B  6B  --  036110
05  0B  02  45  8B  6C  A0  3E  C5  2E  FF  40  86  FF  04  EB  --  036120
2A  12  45  8A  3D  C5  6C  A0  3E  C5  2E  02  F7  E9  03  75  --  036130
00  14  05  02  55  8B  05  8B  6C  A0  3E  C5  2E  2A  EB  E4  --  036140
8B  05  8B  6C  A0  3E  C5  2E  1F  EB  F6  56  89  F4  46  89  --  036150
00  0D  3D  0A  EB  F6  56  89  F4  46  89  00  14  05  02  55  --  036160
05  89  F4  7E  C5  FF  40  86  8B  E1  74  00  10  3D  D1  74  --  036170
86  89  0A  45  8B  F4  7E  C5  00  00  32  45  C7  F4  7E  C5  --  036180
6A  20  75  05  3B  FF  3C  86  8B  6C  60  3E  C5  2E  FF  3C  --  036190
46  8B  F6  76  FF  6C  28  36  FF  2E  6C  2A  36  FF  2E  24  --  0361A0
6A  1E  EB  0A  C4  83  00  5C  ED  6E  9A  50  00  0C  05  F4  --  0361B0
46  8B  F6  76  FF  6C  24  36  FF  2E  6C  26  36  FF  2E  24  --  0361C0
F4  7E  C5  0A  C4  83  00  5C  ED  6E  9A  50  00  0C  05  F4  --  0361D0
2A  12  45  8A  3D  C5  6C  A0  3E  C5  2E  FF  FE  0A  45  C7  --  0361E0
6C  A0  3E  C5  2E  00  6A  00  6A  00  6A  00  6A  74  EB  E4  --  0361F0
6D  0E  36  FF  2E  50  00  14  05  05  8B  02  75  FF  01  FE  --  036200
F2  46  89  10  C4  83  00  5C  47  EE  9A  6D  0C  36  FF  2E  --  036210
C5  6C  A0  3E  C5  2E  00  6A  00  6A  00  6A  00  6A  51  EB  --  036220
75  FF  3D  C5  6C  A0  3E  C5  2E  0E  75  FF  10  75  FF  3D  --  036230
14  05  05  8B  02  75  FF  6C  A0  3E  C5  2E  0A  75  FF  0C  --  036240
5C  47  C8  9A  6D  0C  36  FF  2E  6D  0E  36  FF  2E  50  00  --  036250
```

245

```
10 3D 87 74 00 0D 3D 0A EB F2 46 89 18 C4 83 00 -- 036260
2C 69 97 9A F2 76 FF 0E 74 00 F2 7E 83 AF 74 00 -- 036270
3E C5 2E 00 00 FF 3E 86 C7 09 A3 E9 02 C4 83 00 -- 036280
05 89 6C A0 3E C5 2E 02 55 8B 05 8B 3D C5 6C A0 -- 036290
2B 02 EB 00 01 BE 05 75 00 FF 3E BE 83 02 55 89 -- 0362A0
00 01 B8 05 74 05 0B 02 45 8B 6C A0 3E C5 2E F6 -- 0362B0
6C A0 3E C5 2E FE 59 E9 03 75 C6 23 C0 2B 02 EB -- 0362C0
05 8B 6C A0 3E C5 2E 2A EB E4 2A 12 45 8A 3D C5 -- 0362D0
C5 2E 1F EB F6 56 89 F4 46 89 00 14 05 02 55 8B -- 0362E0
56 89 F4 46 89 00 14 05 02 55 8B 05 8B 6C A0 3E -- 0362F0
F4 7E C5 E1 74 00 10 3D D1 74 00 0D 3D 0A EB F6 -- 036300
EB 00 01 FF 3E 86 C7 08 74 FF 3C 86 3B 0A 45 8B -- 036310
32 45 C7 F4 7E C5 05 89 F4 7E C5 FF 40 86 8B 82 -- 036320
6A 20 75 05 3B FF 3C 86 8B 6C 60 3E C5 2E 00 00 -- 036330
46 8B F6 76 FF 6C 28 36 FF 2E 6C 2A 36 FF 2E 24 -- 036340
6A 1E EB 0A C4 83 00 5C ED 6E 9A 50 00 0C 05 F4 -- 036350
46 8B F6 76 FF 6C 24 36 FF 2E 6C 26 36 FF 2E 24 -- 036360
F4 7E C5 0A C4 83 00 5C ED 6E 9A 50 00 0C 05 F4 -- 036370
2A 12 45 8A 3D C5 6C A0 3E C5 2E FF FE 0A 45 C7 -- 036380
00 14 05 05 8B 02 75 FF 6C A0 3E C5 2E 64 EB E4 -- 036390
00 5C 48 01 9A 6D 0C 36 FF 2E 6D 0E 36 FF 2E 50 -- 0363A0
FF 3D C5 6C A0 3E C5 2E 49 EB F2 46 89 08 C4 83 -- 0363B0
FF 0C 75 FF 3D C5 6C A0 3E C5 2E 0E 75 FF 10 75 -- 0363C0
50 00 14 05 05 8B 02 75 FF 6C A0 3E C5 2E 0A 75 -- 0363D0
83 00 5C 47 DB 9A 6D 0C 36 FF 2E 6D 0E 36 FF 2E -- 0363E0
74 00 10 3D 97 74 00 0D 3D 0A EB F2 46 89 10 C4 -- 0363F0
2C 69 97 9A F2 76 FF 0E 74 00 F2 7E 83 B7 01 FE -- 036400
05 8B 3D C5 6C A0 3E C5 2E 08 15 E9 02 C4 83 00 -- 036410
FE 75 E9 02 55 89 05 89 6C A0 3E C5 2E 02 55 8B -- 036420
83 00 5C 49 0B 9A 6D 0C 36 FF 2E 6D 0E 36 FF 2E -- 036430
5C 94 D5 9A 6D 1C 36 FF 2E 6D 1E 36 FF 2E 04 C4 -- 036440
01 6A FF 42 B6 FF 02 32 FF 42 86 C7 04 C4 83 00 -- 036450
C2 0B F0 56 89 EE 46 89 04 C4 83 00 64 4E A1 9A -- 036460
07 AC E9 02 C4 83 00 2C 69 97 9A 10 6D 68 0E 75 -- 036470
86 8B 04 C4 83 00 64 4B 86 9A EE 76 FF F0 76 FF -- 036480
FF 2E 6C 7E 36 FF 2E 54 6A 05 89 EE 7E C5 FF 42 -- 036490
ED 6E 9A 50 00 02 05 EE 46 8B F0 76 FF 6C 7C 36 -- 0364A0
14 36 FF 2E 6D 16 36 FF 2E 12 6A 0A C4 83 00 5C -- 0364B0
00 5C ED 6E 9A 50 00 56 05 EE 46 8B F0 76 FF 6D -- 0364C0
3E C5 2E 48 74 00 3D 83 6C 78 3E C5 2E 0A C4 83 -- 0364D0
00 01 02 12 85 C7 EE 7E C5 3E 74 00 3D 83 6D 2C -- 0364E0
2A 05 F0 56 8B EE 46 8B 01 02 17 85 C6 EE 7E C5 -- 0364F0
FF 38 BE C5 EE D9 9B FF 3A 96 89 FF 38 86 89 02 -- 036500
9B FF 38 BE C5 05 D9 9B 6D 30 3E C5 2E 1D D9 9B -- 036510
7C 36 FF 2E 6C 7E 36 FF 2E 54 6A 5C EB 04 5D D9 -- 036520
00 5C ED 6E 9A 50 01 34 05 EE 46 8B F0 76 FF 6C -- 036530
FF 6C F0 36 FF 2E 6C F2 36 FF 2E 12 6A 0A C4 83 -- 036540
C4 83 00 5C ED 6E 9A 50 01 88 05 EE 46 8B F0 76 -- 036550
9A 9D D9 9B EE 7E C5 05 D9 9B 6D 34 3E C5 2E 0A -- 036560
9E 9D D9 9B EE 7E C5 05 D9 9B 6D 38 3E C5 2E 01 -- 036570
6A 0A 6A 03 6A EE 76 FF F0 76 FF FF 42 B6 FF 01 -- 036580
00 5C A5 FF 9A 6D 3C 36 FF 2E 6D 3E 36 FF 2E 00 -- 036590
69 97 9A F2 76 FF 0E 74 C0 0B F2 46 89 10 C4 83 -- 0365A0
2E 6C 7E 36 FF 2E 06 6A 06 74 E9 02 C4 83 00 2C -- 0365B0
FF 2E 50 52 04 C4 83 00 5C 90 BE 9A 6C 7C 36 FF -- 0365C0
0A C4 83 00 5C ED 6E 9A 6D 40 36 FF 2E 6D 42 36 -- 0365D0
69 97 9A F2 76 FF 0E 74 00 3D 83 6D 44 3E C5 2E -- 0365E0
00 3D 83 6C 78 3E C5 2E 06 34 E9 02 C4 83 00 2C -- 0365F0
```

```
75 00 3D 83 6D 2C 3E C5 2E 00 99 E9 03 75 01 FE -- 036600
6C 80 36 FF 2E 6C 82 36 FF 2E 12 6A 00 8C E9 03 -- 036610
2E 01 6A 0A C4 83 00 5C ED 6E 9A 50 DC 46 8D 16 -- 036620
FF 2E 6C 7E 36 FF 2E 6C F8 36 FF 2E 6C FA 36 FF -- 036630
7E 83 F2 46 89 0A C4 83 00 5C 94 FB 9A 6C 7C 36 -- 036640
E9 02 C4 83 00 2C 69 97 9A F2 76 FF 0E 74 00 F2 -- 036650
FF 2E 6C F8 36 FF 2E 6C FA 36 FF 2E 12 6A 05 CC -- 036660
0A C4 83 00 5C ED 6E 9A 6C F4 36 FF 2E 6C F6 36 -- 036670
F2 36 FF 2E 6C 80 36 FF 2E 6C 82 36 FF 2E 12 6A -- 036680
19 EB 0A C4 83 00 5C ED 6E 9A 6C F0 36 FF 2E 6C -- 036690
DC 46 8D 16 6C F0 36 FF 2E 6C F2 36 FF 2E 12 6A -- 0366A0
16 02 6A 01 6A 12 6A 0A C4 83 00 5C ED 6E 9A 50 -- 0366B0
FD 9A 6C 7C 36 FF 2E 6C 7E 36 FF 2E 50 DC 46 8D -- 0366C0
6E 9A 50 FF 26 86 8D 16 50 52 0C C4 83 00 5C 93 -- 0366D0
34 B6 FF 0F 74 00 FF 34 BE 83 0A C4 83 00 5C ED -- 0366E0
C5 2E C0 2B 05 32 E9 02 C4 83 00 2C 69 97 9A FF -- 0366F0
05 45 88 6C 40 3E C5 2E E4 2A 07 45 88 6C 40 3E -- 036700
40 3E C5 2E E4 2A 03 45 88 6C 40 3E C5 2E E4 2A -- 036710
E4 2A 07 45 88 6C 38 3E C5 2E E4 2A 01 45 88 6C -- 036720
88 6C 38 3E C5 2E E4 2A 05 45 88 6C 38 3E C5 2E -- 036730
30 3E C5 2E 01 45 88 6C 38 3E C5 2E E4 2A 03 45 -- 036740
01 FF 1C 86 C7 0E 75 01 FF 20 BE 83 02 05 C6 6C -- 036750
C7 00 02 FF 1C 86 C7 0C EB 00 02 FF 1E 86 C7 00 -- 036760
FF 6C 30 36 FF 2E 6C 32 36 FF 2E 00 01 FF 1E 86 -- 036770
43 96 9A FF 26 B6 FF FF 28 B6 FF 01 6A FF 1C B6 -- 036780
76 FF 0E 74 00 F2 7E 83 F2 46 89 0C C4 83 00 64 -- 036790
2E 36 FF 2E 04 82 E9 02 C4 83 00 2C 69 97 9A F2 -- 0367A0
FF 28 B6 FF 01 6A FF 1E B6 FF 6C 2C 36 FF 2E 6C -- 0367B0
83 F2 46 89 0C C4 83 00 64 43 96 9A FF 26 B6 FF -- 0367C0
02 C4 83 00 2C 69 97 9A F2 76 FF 0E 74 00 F2 7E -- 0367D0
C4 83 00 5C 94 D5 9A 50 FF 26 86 8D 16 04 4B E9 -- 0367E0
06 36 FF 2E 12 6A 00 14 05 C7 6D 18 3E C5 2E 04 -- 0367F0
36 FF 2E 6C F6 36 FF 2E 6D 04 36 FF 2E 6D 01 FE -- 036800
5C 94 8D 9A 6C 7C 36 FF 2E 6C 7E 36 FF 2E 6C F4 -- 036810
6D 1C 36 FF 2E 6D 1E 36 FF 2E 50 52 0C C4 83 00 -- 036820
00 3D 83 6D 20 3E C5 2E 0A C4 83 00 5C ED 6E 9A -- 036830
C4 83 00 2C 69 97 9A 35 FF 6D 20 3E C5 2E 12 74 -- 036840
C5 2E 02 55 8B 05 8B 6D 1C 3E C5 2E 03 DC E9 02 -- 036850
36 FF 2E 00 01 F8 46 C7 02 55 89 05 89 6D 24 3E -- 036860
0C 36 FF 2E 6D 0E 36 FF 2E 6D 00 36 FF 2E 6D 02 -- 036870
83 F2 46 89 0A C4 83 00 5C 48 F8 9A F8 76 FF 6D -- 036880
02 C4 83 00 2C 69 97 9A F2 76 FF 0E 74 00 F2 7E -- 036890
0E 36 FF 2E 14 04 45 C6 6D 10 3E C5 2E 03 8D E9 -- 0368A0
8D 16 04 C4 83 00 5C 4E D5 9A 6D 0C 36 FF 2E 6D -- 0368B0
FF 2E 66 6A 04 C4 83 00 2C 5C CB 9A 50 FF 4A 86 -- 0368C0
6E 9A 50 FE B4 86 8D 16 6C 7C 36 FF 2E 6C 7E 36 -- 0368D0
36 FF 2E 6C F2 36 FF 2E 12 6A 0A C4 83 00 5C ED -- 0368E0
0A C4 83 00 5C ED 6E 9A 50 FF 08 86 8D 16 6C F0 -- 0368F0
2A 36 FF 2E 50 FE B4 86 8D 16 50 FF 68 86 8D 16 -- 036900
00 6A 0C C4 83 00 5C 4A 15 9A 6D 28 36 FF 2E 6D -- 036910
0E 36 FF 2E 50 FF 4A 86 8D 16 00 6A 00 6A 00 6A -- 036920
46 89 10 C4 83 00 5C 48 60 9A 6D 0C 36 FF 2E 6D -- 036930
83 00 2C 69 97 9A F2 76 FF 0E 74 00 F2 7E 83 F2 -- 036940
8B 00 01 D6 46 C7 00 01 D4 46 C7 02 DB E9 02 C4 -- 036950
46 86 8D 00 00 FF 48 86 C7 FF 46 86 89 FF 20 86 -- 036960
46 8D 00 01 FA 46 C7 DA 56 89 D8 46 89 5A 16 FF -- 036970
50 90 46 8D 16 57 56 FE 56 89 FC 46 89 5A 16 D4 -- 036980
00 01 D2 46 C7 5E 5F 00 8C 00 02 9A 44 6A 00 6A -- 036990

96 46 C7 00 95 46 C6 02 94 46 C6 00 01 90 46 C7 -- 0369A0
```

```
EE  D9  9B  9A  5E  D9  9B  B2  56  D9  9B  EE  D9  9B  00  00  --  0369B0
45  D9  9B  6D  10  3E  C5  2E  9E  5E  D9  9B  B6  56  D9  9B  --  0369C0
D9  9B  6D  10  3E  C5  2E  A2  5E  D9  9B  BA  56  D9  9B  11  --  0369D0
9B  00  00  AA  46  C7  A6  5E  D9  9B  BE  56  D9  9B  15  45  --  0369E0
6D  48  06  DD  2E  9B  C2  5E  D9  9B  C6  56  D9  9B  EE  D9  --  0369F0
2E  50  AE  46  8D  16  CA  5E  D9  9B  CE  56  D9  9B  01  FE  --  036A00
FF  2E  6D  2A  36  FF  2E  6C  7C  36  FF  2E  6C  7E  36  FF  --  036A10
FF  44  86  8D  16  0C  C4  83  00  5C  4A  15  9A  6D  28  36  --  036A20
6D  0E  36  FF  2E  50  FA  46  8D  16  50  90  46  8D  16  50  --  036A30
36  FF  2E  10  C4  83  00  5C  48  BF  9A  6D  0C  36  FF  2E  --  036A40
2E  04  C4  83  00  5C  49  0B  9A  6D  0C  36  FF  2E  6D  0E  --  036A50
C4  83  00  5C  94  D5  9A  6D  1C  36  FF  2E  6D  1E  36  FF  --  036A60
50  3E  C5  2E  05  89  6C  50  3E  C5  2E  FF  20  86  8B  04  --  036A70
01  05  C7  6C  60  3E  C5  2E  0B  75  00  02  3D  05  8B  6C  --  036A80
FF  1A  BE  83  00  02  05  C7  6C  60  3E  C5  2E  09  EB  00  --  036A90
2E  6D  14  36  FF  2E  6D  16  36  FF  2E  01  6A  35  74  00  --  036AA0
C4  83  00  5C  94  FB  9A  6C  7C  36  FF  2E  6C  7E  36  FF  --  036AB0
69  97  9A  F2  76  FF  0E  74  00  F2  7E  83  F2  46  89  0A  --  036AC0
3E  C5  2E  00  2C  4B  B2  9A  01  5A  E9  02  C4  83  00  2C  --  036AD0
2E  00  01  05  C7  6C  78  3E  C5  2E  00  00  05  C7  6B  DC  --  036AE0
0B  6A  50  F2  46  8D  16  28  74  00  3D  83  6B  D4  3E  C5  --  036AF0
F2  46  8D  16  0A  C4  83  00  64  40  D0  9A  6F  6A  03  6A  --  036B00
EB  0A  C4  83  00  64  40  D0  9A  6F  6A  03  6A  0C  6A  50  --  036B10
64  40  D0  9A  6F  6A  03  6A  16  6A  50  F2  46  8D  16  13  --  036B20
E7  E9  03  74  00  3D  83  6D  2C  3E  C5  2E  0A  C4  83  00  --  036B30
36  FF  2E  6C  F0  36  FF  2E  6C  F2  36  FF  2E  12  6A  00  --  036B40
6A  0A  C4  83  00  5C  ED  6E  9A  6C  80  36  FF  2E  6C  82  --  036B50
6C  FA  36  FF  2E  6C  F4  36  FF  2E  6C  F6  36  FF  2E  12  --  036B60
3E  C5  2E  0A  C4  83  00  5C  ED  6E  9A  6C  F8  36  FF  2E  --  036B70
36  FF  2E  6C  7E  36  FF  2E  66  6A  00  01  05  C7  6D  2C  --  036B80
5C  ED  6E  9A  6D  50  36  FF  2E  6D  52  36  FF  2E  6C  7C  --  036B90
6C  80  36  FF  2E  6C  82  36  FF  2E  12  6A  0A  C4  83  00  --  036BA0
83  00  5C  ED  6E  9A  6D  54  36  FF  2E  6D  56  36  FF  2E  --  036BB0
36  FF  2E  6C  82  36  FF  2E  01  6A  01  6A  12  6A  0A  C4  --  036BC0
5C  93  FD  9A  6C  7C  36  FF  2E  6C  7E  36  FF  2E  6C  80  --  036BD0
5C  ED  6E  9A  50  FF  26  86  8D  16  50  52  0C  C4  83  00  --  036BE0
5C  60  DD  9A  FF  26  B6  FF  FF  28  B6  FF  0A  C4  83  00  --  036BF0
5C  94  D5  9A  50  FF  26  86  8D  16  04  C4  83  00  01  FE  --  036C00
61  9A  07  75  00  3D  83  6B  D4  3E  C5  2E  04  C4  83  00  --  036C10
9A  00  44  5F  EB  9A  00  44  5A  FD  9A  05  EB  00  4C  02  --  036C20
57  56  EC  8B  55  57  56  CB  5E  5F  C9  9B  00  54  47  78  --  036C30
5F  00  8C  00  02  9A  46  6A  00  6A  0A  76  FF  0C  76  FF  --  036C40
C5  01  04  45  C6  0A  7E  C5  00  01  05  C7  0A  7E  C5  5E  --  036C50
D9  9B  00  00  06  45  C7  0A  7E  C5  03  05  45  C6  0A  7E  --  036C60
9B  0A  5D  D9  9B  0A  7E  C5  22  55  D9  9B  0A  7E  C5  EE  --  036C70
0E  5D  D9  9B  0A  7E  C5  26  55  D9  9B  0A  7E  C5  EE  D9  --  036C80
2A  55  D9  9B  0A  7E  C5  11  45  D9  9B  6D  10  3E  C5  2E  --  036C90
15  45  D9  9B  6D  10  3E  C5  2E  12  5D  D9  9B  0A  7E  C5  --  036CA0
7E  C5  16  5D  D9  9B  0A  7E  C5  2E  55  D9  9B  0A  7E  C5  --  036CB0
36  55  D9  9B  0A  7E  C5  EE  D9  9B  00  00  1A  45  C7  0A  --  036CC0
0A  7E  C5  6D  48  06  DD  2E  9B  32  5D  D9  9B  0A  7E  C5  --  036CD0
45  C6  0A  7E  C5  3A  5D  D9  9B  0A  7E  C5  3E  55  D9  9B  --  036CE0
57  56  CB  5E  5F  C9  9B  02  44  45  C6  0A  7E  C5  00  43  --  036CF0
D9  9B  00  00  F4  46  C7  00  00  F6  46  C7  00  00  1C  C8  --  036D00
8B  0A  45  8B  3D  C5  6C  A0  3E  C5  2E  F0  5E  D9  9B  EE  --  036D10
8B  3D  C5  6C  A0  3E  C5  2E  FE  56  89  FC  46  89  0C  55  --  036D20
6D  58  3E  C5  2E  FA  56  89  F8  46  89  10  55  8B  0E  45  --  036D30

9B  05  D9  9B  FA  5E  8E  F8  7E  03  02  E7  C1  4F  3D  8B  --  036D40
7C  F4  46  3B  48  48  05  8B  6D  58  3E  C5  2E  EC  5E  D9  --  036D50
```

248

```
D9 9B FA 5E 8E F8 7E 03 02 E7 C1 47 F6 7E 8B 4E -- 036D60
03 02 E7 C1 F6 7E 8B E4 5E DD 9B EC 66 D8 9B 05 -- 036D70
F0 46 D8 9B E4 4E DC 9B 05 D9 9B FE 5E 8E FC 7E -- 036D80
FA 5E 8E F8 7E 03 02 E7 C1 F6 7E 8B F0 5E D9 9B -- 036D90
C5 A4 EB F6 46 FF F4 46 FF EC 5E D9 9B 05 D9 9B -- 036DA0
3E C5 2E E4 5E DD 9B EC 66 D8 9B 05 D9 9B F8 7E -- 036DB0
D9 9B FE 5E 8E FC 7E 03 02 E7 C1 4F 3D 8B 6D 58 -- 036DC0
EE D9 9B F0 5E D9 9B F0 46 D8 9B E4 4E DC 9B 05 -- 036DD0
5C ED 94 9A E4 5E DC 9B F0 46 D9 9B E4 5E DD 9B -- 036DE0
56 CB 5E 5F C9 9B C0 2B 02 EB 00 01 B8 05 76 00 -- 036DF0
00 00 05 C7 6C 9C 3E C5 2E 00 00 06 C8 57 01 FE -- 036E00
74 00 3D 80 6B F4 3E C5 2E 05 FF 6B F0 3E C5 2E -- 036E10
36 FF 2E 6D 5E 36 FF 2E 35 FF 6B F0 3E C5 2E 19 -- 036E20
2E 50 FE 46 8D 16 06 C4 83 00 5C 97 1E 9A 6D 5C -- 036E30
00 64 40 D0 9A 01 F5 68 03 6A 35 FF 6B F0 3E C5 -- 036E40
2C 69 97 9A FE 76 FF 0E 74 00 FE 7E 83 0A C4 83 -- 036E50
C5 2E 05 8B 6B F0 3E C5 2E 01 60 E9 02 C4 83 00 -- 036E60
2E 39 74 00 3D 83 6B D4 3E C5 2E 05 89 6B FC 3E -- 036E70
46 36 FF 2E 50 FE 46 8D 16 0C 05 C6 6C 44 3E C5 -- 036E80
64 40 D0 9A 6E 6A 05 6A 01 6A 6C 44 36 FF 2E 6C -- 036E90
69 97 9A FE 76 FF 0E 74 00 FE 7E 83 0E C4 83 00 -- 036EA0
FA 46 C7 00 05 FC 46 C7 01 0F E9 02 C4 83 00 2C -- 036EB0
2E FC 76 FF FA 76 FF 00 6A 50 FE 46 8D 16 00 0E -- 036EC0
00 64 3D BA 9A 01 2E 68 04 6A 35 FF 6C E0 3E C5 -- 036ED0
2C 69 97 9A FE 76 FF 0E 74 00 FE 7E 83 10 C4 83 -- 036EE0
00 00 05 C7 6D 60 3E C5 2E 00 D0 E9 02 C4 83 00 -- 036EF0
C7 6D 64 3E C5 2E 0B 74 00 3D 83 6B D4 3E C5 2E -- 036F00
C5 2E 00 16 05 C7 6D 64 3E C5 2E 09 EB 00 0C 05 -- 036F10
C0 3E C5 2E 6C 60 36 C4 2E 00 07 05 C7 6D 68 3E -- 036F20
2E 05 8B 6C 50 3E C5 2E 10 75 04 3B 26 05 8B 6C -- 036F30
2E 05 8B 6C 60 3E C5 2E 0E EB 05 89 6D 6C 3E C5 -- 036F40
6D 62 36 FF 2E 50 FE 46 8D 16 05 89 6D 6C 3E C5 -- 036F50
6A 35 FF 6C E0 3E C5 2E FA 76 FF 6D 60 36 FF 2E -- 036F60
00 FE 7E 83 10 C4 83 00 64 3D BA 9A 01 2F 68 04 -- 036F70
16 38 EB 02 C4 83 00 2C 69 97 9A FE 76 FF 0D 74 -- 036F80
02 6A 35 FF 6C E0 3E C5 2E FC 76 FF 50 FE 46 8D -- 036F90
74 00 FE 7E 83 0C C4 83 00 64 3D BA 9A 01 2C 68 -- 036FA0
C5 2E 09 EB 02 C4 83 00 2C 69 97 9A FE 76 FF 0D -- 036FB0
00 02 C8 57 56 CB 5E 5F C9 00 01 05 C7 6B E0 3E -- 036FC0
6C 00 36 FF 2E 6C 02 36 FF 2E 50 FE 46 8D 16 00 -- 036FD0
FE 7E 83 0C C4 83 00 64 40 D0 9A 01 F8 68 04 6A -- 036FE0
5F EB 02 C4 83 00 2C 69 97 9A FE 76 FF 0D 74 00 -- 036FF0
50 FE 46 8D 16 00 00 05 C7 6B FC 3E C5 2E 01 FE -- 037000
64 40 D0 9A 01 F6 68 03 6A 35 FF 6B F0 3E C5 2E -- 037010
69 97 9A FE 76 FF 0D 74 00 FE 7E 83 0A C4 83 00 -- 037020
C5 2E 0D FF 6B F0 3E C5 2E 2A EB 02 C4 83 00 2C -- 037030
2E 35 FF 6B F0 3E C5 2E 19 74 00 3D 80 6B F4 3E -- 037040
C4 83 00 5C 97 1E 9A 6D 70 36 FF 2E 6D 72 36 FF -- 037050
50 FE 46 8D 16 00 00 02 C8 57 56 CB 5E 5F C9 06 -- 037060
FF 6C E0 3E C5 2E 6D 74 36 FF 2E 6D 76 36 FF 2E -- 037070
7E 83 0E C4 83 00 64 3D BA 9A 01 33 68 03 6A 35 -- 037080
EB 02 C4 83 00 2C 69 97 9A FE 76 FF 0D 74 00 FE -- 037090
2E EC 8B 55 57 56 CB 5E 5F C9 00 2C 60 5B 9A 05 -- 0370A0
78 3E C5 2E 00 14 05 02 55 8B 05 8B 6C A0 3E C5 -- 0370B0
30 45 C6 3D C5 6D 78 3E C5 2E 02 55 89 05 89 6D -- 0370C0
48 45 88 3D C5 6D 78 3E C5 2E 00 2C 5D 90 9A 00 -- 0370D0

9B 3D C5 6D 78 3E C5 2E 05 D9 9B 6D 7C 3E C5 2E -- 0370E0
6D 78 3E C5 2E 05 D9 9B 6D 80 3E C5 2E 34 5D D9 -- 0370F0
6D 84 3E C5 2E 6D 80 36 C4 2E 38 5D D9 9B 3D C5 -- 037100
```

249

```
D9 9B 3D C5 6D 78 3E C5 2E 24 D8 26 9B 05 D9 9B -- 037110
9B 05 D9 9B 6D 88 3E C5 2E 6D 7C 36 C4 2E 3C 5D -- 037120
C5 2E 40 5D D9 9B 3D C5 6D 78 3E C5 2E 24 D8 26 -- 037130
3D C5 6D 78 3E C5 2E 00 03 45 C6 3D C5 6D 78 3E -- 037140
2E 00 05 45 C6 3D C5 6D 78 3E C5 2E 00 04 45 C6 -- 037150
C5 6D 78 3E C5 2E 00 06 45 C6 3D C5 6D 78 3E C5 -- 037160
00 08 45 C7 3D C5 6D 78 3E C5 2E 00 07 45 C6 3D -- 037170
89 3D C5 6D 78 3E C5 2E 05 8B 6C C0 3E C5 2E 00 -- 037180
3D C5 6D 78 3E C5 2E 05 8B 6D 58 3E C5 2E 0A 45 -- 037190
8D 16 00 00 3A C8 57 56 CB 5E 5F C9 9B 46 45 89 -- 0371A0
3E C5 2E 6D 74 36 FF 2E 6D 76 36 FF 2E 50 C8 46 -- 0371B0
C4 83 00 64 3D BA 9A 01 33 68 03 6A 35 FF 6C E0 -- 0371C0
2E 05 89 6D 58 3E C5 2E 05 8B 6D 74 3E C5 2E 0E -- 0371D0
05 C7 0A 7E C5 2A 7D 00 03 3D 05 8B 6D 58 3E C5 -- 0371E0
00 00 05 C7 6B E0 3E C5 2E 00 2C 60 5B 9A 00 01 -- 0371F0
9A 06 4D E9 03 75 00 3D 83 6D 74 3E C5 2E 01 FE -- 037200
0A 7E C5 52 74 00 C8 7E 83 06 45 E9 00 2C 6A 32 -- 037210
76 FF 50 C6 46 8D 16 00 05 FE 46 C7 00 02 05 C7 -- 037220
3D BA 9A 01 2C 68 02 6A 35 FF 6C E0 3E C5 2E FE -- 037230
97 9A C8 76 FF 0E 74 00 C6 7E 83 0C C4 83 00 64 -- 037240
6A 00 6A 00 6A 00 6A 06 03 E9 02 C4 83 00 2C 69 -- 037250
C5 05 ED E9 0A C4 83 00 64 28 52 9A C8 76 FF 00 -- 037260
9A 00 00 05 C7 6B E0 3E C5 2E 00 01 05 C7 0A 7E -- 037270
2E 10 12 45 C6 3D C5 6C A0 3E C5 2E 00 2C 3E 28 -- 037280
04 C4 83 00 64 4E A1 9A 04 6A 35 FF 6D 58 3E C5 -- 037290
75 C2 0B 0C 55 89 0A 45 89 3D C5 6C A0 3E C5 2E -- 0372A0
2E 05 9D E9 02 C4 83 00 2C 69 97 9A 10 6D 68 0E -- 0372B0
04 C4 83 00 64 4E A1 9A 04 6A 35 FF 6D 58 3E C5 -- 0372C0
75 C2 0B 10 55 89 0E 45 89 3D C5 6C A0 3E C5 2E -- 0372D0
16 05 6D E9 02 C4 83 00 2C 69 97 9A 10 6D 68 0E -- 0372E0
75 FF 10 75 FF 3D C5 6C A0 3E C5 2E 50 C8 46 8D -- 0372F0
C5 2E 0A 75 FF 0C 75 FF 3D C5 6C A0 3E C5 2E 0E -- 037300
83 00 64 40 D0 9A 03 24 68 07 6A 35 FF 6D 58 3E -- 037310
00 2C 69 97 9A C8 76 FF 0E 74 00 C8 7E 83 12 C4 -- 037320
0A 45 8B 3D C5 6C A0 3E C5 2E 05 26 E9 02 C4 83 -- 037330
3D C5 6C A0 3E C5 2E FC 56 89 FA 46 89 0C 55 8B -- 037340
9B FA 7E C5 F8 56 89 F6 46 89 10 55 8B 0E 45 8B -- 037350
9B 6D 88 3E C5 2E 15 D9 9B 6D 7C 3E C5 2E 05 D9 -- 037360
15 D9 9B 6D 80 3E C5 2E 05 D9 9B F6 7E C5 1D D9 -- 037370
FF 03 EB 00 01 CA 46 C7 1D D9 9B 6D 84 3E C5 2E -- 037380
E3 E9 03 75 05 3B CA 46 8B 6D 58 3E C5 2E CA 46 -- 037390
8E FA 7E 03 02 E7 C1 CA 7E 8B 6D 7C 36 C4 2E 00 -- 0373A0
19 73 00 5C ED 94 9A 1C D8 26 9B 05 D9 9B FC 5E -- 0373B0
2E 05 D9 9B FC 5E 8E FA 7E 03 02 E7 C1 CA 7E 8B -- 0373C0
7E 8B 6D 88 36 C4 2E 36 EB 1D D9 9B 6D 7C 3E C5 -- 0373D0
D8 26 9B 05 D9 9B FC 5E 8E FA 7E 03 02 E7 C1 CA -- 0373E0
7E 03 02 E7 C1 CA 7E 8B 17 76 00 5C ED 94 9A 1C -- 0373F0
D9 9B 6D 88 3E C5 2E 05 D9 9B FC 5E 8E FA 01 FE -- 037400
8E F6 7E 03 02 E7 C1 CA 7E 8B 6D 80 36 C4 2E 1D -- 037410
1A 73 00 5C ED 94 9A 1C D8 26 9B 05 D9 9B F8 5E -- 037420
2E 05 D9 9B F8 5E 8E F6 7E 03 02 E7 C1 CA 7E 8B -- 037430
8B 6D 84 36 C4 2E FF 47 E9 1D D9 9B 6D 80 3E C5 -- 037440
26 9B 05 D9 9B F8 5E 8E F6 7E 03 02 E7 C1 CA 7E -- 037450
C1 CA 7E 8B FF 25 E9 03 77 00 5C ED 94 9A 1C D8 -- 037460
6D 84 3E C5 2E 05 D9 9B F8 5E 8E F6 7E 03 02 E7 -- 037470

6D 58 3E C5 2E 00 2C 61 38 9A FF 0B E9 1D D9 9B -- 037480
64 4E A1 9A 01 6A D2 76 FF D2 46 89 40 18 05 6B -- 037490
6D 68 0E 75 C2 0B DA 56 89 D8 46 89 04 C4 83 00 -- 0374A0
58 3E C5 2E 03 A2 E9 02 C4 83 00 2C 69 97 9A 10 -- 0374B0
```

```
64 4E A1 9A 01 6A D0 76 FF D0 46 89 18 05 6B 6D -- 0374C0
6D 68 0E 75 C2 0B D6 56 89 D4 46 89 04 C4 83 00 -- 0374D0
00 6A 01 6A 03 72 E9 02 C4 83 00 2C 69 97 9A 10 -- 0374E0
FA 76 FF FC 76 FF F6 76 FF F8 76 FF 00 6A 00 6A -- 0374F0
DA 76 FF D2 76 FF 35 FF 02 75 FF 6D 78 3E C5 2E -- 037500
C0 0B C8 46 89 1A C4 83 00 2C DA E5 9A D8 76 FF -- 037510
03 2E E9 02 C4 83 00 2C 69 97 9A C8 76 FF 0E 74 -- 037520
55 89 05 89 D4 7E C5 00 18 05 D6 56 8B D4 46 8B -- 037530
7E C5 05 45 88 D4 7E C5 05 8B 6C C0 3E C5 2E 02 -- 037540
45 89 D4 7E C5 06 45 8B D8 7E C5 01 04 45 C6 D4 -- 037550
C5 10 5D D9 9B D4 7E C5 10 45 D9 9B D8 7E C5 06 -- 037560
D8 7E C5 14 5D D9 9B D4 7E C5 14 45 D9 9B D8 7E -- 037570
D9 9B D8 7E C5 08 5D D9 9B D4 7E C5 08 45 D9 9B -- 037580
CE 46 C7 01 CD 46 C6 0C 5D D9 9B D4 7E C5 0C 45 -- 037590
00 CF E9 03 75 00 CD 7E 80 CE 46 FF 03 EB 00 01 -- 0375A0
9A 50 D8 46 8D 16 50 CD 46 8D 16 50 CC 46 8D 16 -- 0375B0
D4 7E 03 F8 8B 18 CE 46 6B 0C C4 83 00 2C FE 3D -- 0375C0
D6 56 8B D4 46 03 18 C6 6B 46 CE 76 8B D6 5E 8E -- 0375D0
18 CE 56 6B 05 8B 6C C0 3E C5 2E 02 55 89 05 89 -- 0375E0
8B 18 CE 46 6B 05 45 88 D6 5E 8E D4 7E 03 FA 8B -- 0375F0
D8 7E C5 01 04 45 C6 D6 5E 8E D4 7E 03 F8 01 FE -- 037600
89 D6 5E 8E D4 7E 03 FA 8B 18 CE 56 6B 06 45 8B -- 037610
03 F8 8B 18 CE 46 6B 10 45 D9 9B D8 7E C5 06 45 -- 037620
14 45 D9 9B D8 7E C5 10 5D D9 9B D6 5E 8E D4 7E -- 037630
14 5D D9 9B D6 5E 8E D4 7E 03 F8 8B 18 CE 46 6B -- 037640
D4 7E 03 F8 8B 18 CE 46 6B 08 45 D9 9B D8 7E C5 -- 037650
46 6B 0C 45 D9 9B D8 7E C5 08 5D D9 9B D6 5E 8E -- 037660
25 E9 0C 5D D9 9B D6 5E 8E D4 7E 03 F8 8B 18 CE -- 037670
D6 5E 8E D4 7E 03 F8 8B 18 C6 6B 4E CE 76 8B FF -- 037680
D9 9B 6D 7C 3E C5 2E 00 00 02 45 C7 00 00 05 C7 -- 037690
5E D9 9B 05 D9 9B 6D 88 3E C5 2E E2 5E D9 9B 05 -- 0376A0
3E C5 2E EA 5E D9 9B 05 D9 9B 6D 80 3E C5 2E E6 -- 0376B0
05 8B 6D 58 3E C5 2E EE 5E D9 9B 05 D9 9B 6D 84 -- 0376C0
46 89 D6 56 8B D4 46 8B 00 00 F4 46 C7 F2 46 89 -- 0376D0
46 C7 07 74 00 3D 83 6B D4 3E C5 2E DE 56 89 DC -- 0376E0
16 00 2C 60 5B 9A 00 01 E0 46 C7 05 EB FF FF E0 -- 0376F0
01 FA 68 03 6A 35 FF 6B F0 3E C5 2E 50 C8 46 8D -- 037700
76 FF 0E 74 00 C8 7E 83 0A C4 83 00 64 40 D0 9A -- 037710
F0 3E C5 2E 01 34 E9 02 C4 83 00 2C 69 97 9A C8 -- 037720
2E 50 C8 46 8D 16 05 89 6B FC 3E C5 2E 05 8B 6B -- 037730
00 64 40 D0 9A 02 02 68 03 6A 35 FF 6C 18 3E C5 -- 037740
2C 69 97 9A C8 76 FF 0E 74 00 C8 7E 83 0A C4 83 -- 037750
C5 2E 05 FF 6C 18 3E C5 2E 00 F9 E9 02 C4 83 00 -- 037760
0B 05 C6 6C 44 3E C5 2E 39 74 00 3D 83 6B D4 3E -- 037770
6A 6C 44 36 FF 2E 6C 46 36 FF 2E 50 C8 46 8D 16 -- 037780
C8 7E 83 0E C4 83 00 64 40 D0 9A 6E 6A 05 6A 01 -- 037790
AF E9 02 C4 83 00 2C 69 97 9A C8 76 FF 0E 74 00 -- 0377A0
00 CE 68 04 6A 50 DC 46 8D 16 50 C8 46 8D 16 00 -- 0377B0
76 FF 0E 74 00 C8 7E 83 0C C4 83 00 64 40 D0 9A -- 0377C0
D4 3E C5 2E 00 84 E9 02 C4 83 00 2C 69 97 9A C8 -- 0377D0
6A 03 6A 0C 6A 50 C8 46 8D 16 26 74 00 3D 83 6B -- 0377E0
FF 0D 74 00 C8 7E 83 0A C4 83 00 64 40 D0 9A 6F -- 0377F0
76 FF 54 EB 02 C4 83 00 2C 69 97 9A C8 76 01 FE -- 037800
FF DA 76 FF 04 C4 83 00 64 4E E3 9A D4 76 FF D6 -- 037810

2E 50 C8 46 8D 16 04 C4 83 00 64 4E E3 9A D8 76 -- 037820
D0 9A 01 F8 68 04 6A 6C 00 36 FF 2E 6C 02 36 FF -- 037830
9A C8 76 FF 0D 74 00 C8 7E 83 0C C4 83 00 64 40 -- 037840
05 C7 6B FC 3E C5 2E 09 EB 02 C4 83 00 2C 69 97 -- 037850
46 8D 16 00 00 02 C8 57 56 CB 5E 5F C9 9B 00 00 -- 037860
```

EP 0 533 348 A2

```
BA  9A  01  36  68  01  6A  35  FF  6C  E0  3E  C5  2E  50  FE  --  037870
9A  FE  76  FF  0B  74  00  FE  7E  83  0A  C4  83  00  64  3D  --  037880
00  04  C8  57  56  CB  5E  5F  C9  02  C4  83  00  2C  69  97  --  037890
6C  44  36  FF  2E  6C  46  36  FF  2E  50  FC  46  8D  16  00  --  0378A0
7E  83  0E  C4  83  00  64  40  D0  9A  6E  6A  05  6A  01  6A  --  0378B0
EB  02  C4  83  00  2C  69  97  9A  FC  76  FF  0D  74  00  FC  --  0378C0
00  05  FE  46  C7  32  74  00  3D  83  6B  E0  3E  C5  2E  3C  --  0378D0
6A  35  FF  6C  E0  3E  C5  2E  FE  76  FF  50  FC  46  8D  16  --  0378E0
00  FC  7E  83  0C  C4  83  00  64  3D  BA  9A  01  2C  68  02  --  0378F0
5E  5F  C9  02  C4  83  00  2C  69  97  9A  FC  76  FF  0B  74  --  037900
C4  83  00  64  59  DC  9A  0A  76  FF  EC  8B  55  57  56  CB  --  037910
50  FE  46  8D  16  00  00  02  C8  57  56  CB  5E  5F  C9  02  --  037920
FF  6C  E0  3E  C5  2E  6D  74  36  FF  2E  6D  76  36  FF  2E  --  037930
5B  9A  0E  C4  83  00  64  3D  BA  9A  01  33  68  03  6A  35  --  037940
74  3E  C5  2E  00  00  05  C7  6B  E0  3E  C5  2E  00  2C  60  --  037950
56  CB  5E  5F  C9  00  2C  6A  32  9A  05  74  00  3D  83  6D  --  037960
FF  2E  2A  74  00  3D  83  6C  9C  3E  C5  2E  EC  8B  55  57  --  037970
36  FF  2E  6C  AE  36  FF  2E  6C  A8  36  FF  2E  6C  AA  36  --  037980
2E  00  2C  60  5B  9A  08  C4  83  00  2C  6B  80  9A  6C  AC  --  037990
02  C8  57  56  CB  5E  5F  C9  00  00  05  C7  6C  9C  3E  C5  --  0379A0
FE  46  8D  16  13  74  00  3D  83  6B  D4  3E  C5  2E  00  00  --  0379B0
2E  0A  C4  83  00  64  40  D0  9A  6F  6A  03  6A  0C  6A  50  --  0379C0
8D  16  00  44  5F  EB  9A  20  74  00  3D  83  6C  78  3E  C5  --  0379D0
83  00  64  40  D0  9A  01  F6  68  03  6A  01  6A  50  FE  46  --  0379E0
01  6A  50  FE  46  8D  16  14  EB  00  54  C8  1C  9A  0A  C4  --  0379F0
16  0A  C4  83  00  64  40  D0  9A  01  F7  68  03  6A  01  FE  --  037A00
07  6A  00  6A  00  6A  00  6A  00  6A  00  6A  50  FE  46  8D  --  037A10
74  00  FE  7E  83  12  C4  83  00  64  40  D0  9A  01  F9  68  --  037A20
CB  5E  5F  C9  02  C4  83  00  2C  69  97  9A  FE  76  FF  0B  --  037A30
6B  F0  3E  C5  2E  50  FE  46  8D  16  00  00  02  C8  57  56  --  037A40
83  0A  C4  83  00  64  40  D0  9A  01  FA  68  03  6A  35  FF  --  037A50
02  C4  83  00  2C  69  97  9A  FE  76  FF  0E  74  00  FE  7E  --  037A60
6A  35  FF  6C  18  3E  C5  2E  50  FE  46  8D  16  00  85  E9  --  037A70
00  FE  7E  83  0A  C4  83  00  64  40  D0  9A  02  02  68  03  --  037A80
16  59  EB  02  C4  83  00  2C  69  97  9A  FE  76  FF  0D  74  --  037A90
C4  83  00  64  40  D0  9A  01  FB  68  02  6A  50  FE  46  8D  --  037AA0
83  00  2C  69  97  9A  FE  76  FF  0D  74  00  FE  7E  83  08  --  037AB0
50  FE  46  8D  16  0D  FF  6C  18  3E  C5  2E  34  EB  02  C4  --  037AC0
9A  01  F8  68  04  6A  6C  00  36  FF  2E  6C  02  36  FF  2E  --  037AD0
FE  76  FF  0B  74  00  FE  7E  83  0C  C4  83  00  64  40  D0  --  037AE0
02  C8  57  56  CB  5E  5F  C9  02  C4  83  00  2C  69  97  9A  --  037AF0
0E  7E  C5  00  5C  ED  99  9A  05  D9  9B  0A  7E  C5  00  00  --  037B00
83  00  64  1F  4C  9A  07  6A  00  5C  ED  99  9A  05  D9  9B  --  037B10
2E  50  FE  46  8D  16  16  05  C6  6C  44  3E  C5  2E  12  C4  --  037B20
9A  6E  6A  05  6A  01  6A  6C  44  36  FF  2E  6C  46  36  FF  --  037B30
00  3C  B3  24  CB  5E  5F  C9  9B  0E  C4  83  00  64  40  D0  --  037B40
00  3C  D5  A8  00  3C  86  9A  00  3C  DB  66  00  3C  D5  A6  --  037B50
00  3C  86  9C  00  3C  D5  BE  00  3C  D6  04  00  3C  D6  00  --  037B60
00  3C  D5  AE  00  3C  86  9E  00  3C  D5  40  00  3C  DB  89  --  037B70
00  3C  D5  BA  00  3C  D5  B6  00  3C  90  7A  00  3C  D5  B2  --  037B80
00  3C  D9  68  00  3C  D9  66  00  3C  D5  AA  00  3C  90  7E  --  037B90
00  3C  D9  D2  00  3C  D9  F6  00  3C  D8  D2  00  3C  D8  F6  --  037BA0
00  3C  D9  FA  00  3C  D8  D3  00  3C  D9  D6  00  3C  D8  F7  --  037BB0

00  3C  91  10  00  3C  DB  5D  00  3C  DB  5C  00  3C  DB  64  --  037BC0
00  3C  91  0E  00  3C  DB  61  00  3C  DB  60  00  3C  DB  5E  --  037BD0
00  3C  D5  C8  00  3C  D5  C2  00  3C  D5  CC  00  3C  DB  62  --  037BE0
00  3C. 90  C6  00  3C  86  A2  00  3C  90  C2  00  3C  D5  C6  --  037BF0
D9  F7  00  3C  D9  D5  00  3C  D9  D4  00  3C  D9  D3  01  FE  --  037C00
D5  FC  00  3C  D9  62  00  3C  D9  F9  00  3C  D9  F8  00  3C  --  037C10
```

252

```
D5 E4 00 3C D5 E0 00 3C D5 DC 00 3C D5 4F 00 3C -- 037C20
D9 64 00 3C D5 F4 00 3C D5 EC 00 3C D5 E8 00 3C -- 037C30
D5 C4 00 3C D5 CA 00 3C DA 3F 00 3C DA 3E 00 3C -- 037C40
F5 A4 00 3C 91 12 00 3C 92 52 00 3C 92 54 00 3C -- 037C50
90 EA 00 3C D5 75 00 3C D5 6D 00 3C D5 5E 00 3C -- 037C60
D9 1A 00 3C D9 3E 00 3C 90 D8 00 3C 90 FC 00 3C -- 037C70
D6 57 00 3C D6 34 00 3C D6 2E 00 3C D6 2A 00 3C -- 037C80
D6 14 00 3C D6 06 00 3C D6 2C 00 3C D6 18 00 3C -- 037C90
29 26 00 3C 90 C4 00 3C D6 0A 00 3C D6 38 00 3C -- 037CA0
87 6E 00 3C D5 7C 00 3C 87 DE 00 3C 87 DA 00 6C -- 037CB0
AE 60 3F F0 00 00 00 00 00 00 00 3C 87 72 00 3C -- 037CC0
DB 4E 00 3C D5 84 00 3C D5 AC 00 3C AE B4 00 3C -- 037CD0
D5 93 00 3C DB 54 00 3C DB 52 00 3C DB 50 00 3C -- 037CE0
DA 4E 00 3C DA 46 00 3C DA 42 00 3C DB 5A 00 3C -- 037CF0
C5 EC 8B 55 57 56 00 3C DA 52 00 3C DA 4A 00 3C -- 037D00
24 76 FF 26 76 FF 57 2A 76 FF 00 00 05 C7 28 7E -- 037D10
FF 1A 76 FF 1C 76 FF 1E 76 FF 20 76 FF 22 76 FF -- 037D20
76 FF 10 76 FF 12 76 FF 14 76 FF 16 76 FF 18 76 -- 037D30
C9 22 C4 83 00 2C 6D D5 9A 0A 76 FF 0C 76 FF 0E -- 037D40
11 74 00 80 0E 46 F7 00 01 04 C8 57 56 CB 5E 5F -- 037D50
EB 0E 46 89 FF 7F 25 0E 46 8B 00 01 FE FC 86 C7 -- 037D60
86 C7 11 74 00 80 12 46 F7 00 00 FE FC 86 C7 06 -- 037D70
C7 06 EB 12 46 89 FF 7F 25 12 46 8B 00 01 FE FE -- 037D80
FF 00 86 8D 16 28 76 FF 2A 76 FF 00 00 FE FE 86 -- 037D90
C5 0C C4 83 00 54 F7 DA 9A 0A 76 FF 0C 76 FF 50 -- 037DA0
76 FF 57 2A 76 FF 00 DC E9 03 74 00 3D 83 28 7E -- 037DB0
18 76 FF 1A 76 FF 1C 76 FF 50 FF 00 86 8D 16 10 -- 037DC0
3D 83 28 7E C5 12 C4 83 00 2C 6F D3 9A 16 76 FF -- 037DD0
00 64 4E A1 9A 01 6A 02 14 68 00 B0 E9 03 74 00 -- 037DE0
05 0B 02 45 8B 02 55 89 05 89 1E 7E C5 04 C4 83 -- 037DF0
76 FF 00 8A E9 10 6D 05 C7 28 7E C5 0A 75 01 FE -- 037E00
9A 35 FF 02 75 FF 1E 7E C5 22 76 FF 24 76 FF 26 -- 037E10
FE B6 FF 28 76 FF 2A 76 FF 0A C4 83 00 2C 72 49 -- 037E20
76 FF 1A 76 FF 1C 76 FF 12 76 FF FE FC B6 FF FE -- 037E30
02 75 FF 1E 7E C5 50 FF 00 86 8D 16 16 76 FF 18 -- 037E40
1E C4 83 00 2C 70 31 9A 0A 76 FF 0C 76 FF 35 FF -- 037E50
C5 14 76 FF 57 2A 76 FF 30 75 00 3D 83 28 7E C5 -- 037E60
FF 0A C4 83 00 2C 72 CF 9A 35 FF 02 75 FF 1E 7E -- 037E70
35 FF 02 75 FF 1E 7E C5 0E 76 FF 28 76 FF 2A 76 -- 037E80
22 C8 57 56 CB 5E 5F C9 0A C4 83 00 2C 75 81 9A -- 037E90
9B 12 7E C5 00 01 F2 46 C7 00 00 F0 46 C7 00 00 -- 037EA0
89 08 C4 83 00 5C EE 14 9A 00 5C ED 99 9A 05 D9 -- 037EB0
C5 DE 5E DD 9B 02 C4 83 00 5C ED AF 9A 50 EC 46 -- 037EC0
46 D9 9B E8 5E D9 9B DE 66 DC 9B 05 D9 9B 12 7E -- 037ED0
83 00 5C EE 14 9A 00 5C ED 99 9A F0 4E DA 9B E8 -- 037EE0
46 8B F4 46 89 F8 46 89 EC 46 8B EE 46 89 08 C4 -- 037EF0
C7 FC 46 89 FE 46 89 C0 2B F6 46 89 FA 46 89 EE -- 037F00
46 8D 16 E6 76 FF 26 76 FF 28 76 FF FF FF E6 46 -- 037F10
76 FF 1E 76 FF 20 76 FF 22 76 FF 24 76 FF 50 F4 -- 037F20
0E 76 FF 10 76 FF 16 76 FF 18 76 FF 1A 76 FF 1C -- 037F30
C9 9B 22 C4 83 00 2C 6D D5 9A 0A 76 FF 0C 76 FF -- 037F40
56 3B 0C 56 8B 0A 46 8B EC 8B 55 57 56 CB 5E 5F -- 037F50

6F 05 C7 18 7E C5 09 76 0E 46 3B 0E 7C 07 7F 10 -- 037F60
10 70 05 C7 18 7E C5 09 79 00 0C 7E 83 3A EB 10 -- 037F70
07 7F 4C 55 3B 10 56 8B 0E 46 8B 12 7E C5 2B EB -- 037F80
0D EB 10 71 05 C7 18 7E C5 09 72 4A 45 3B 0E 7C -- 037F90
5E 5F C9 10 6C 05 C7 18 7E C5 07 75 01 16 7E 83 -- 037FA0
1C 45 88 0E 7E C5 20 46 8B 00 00 04 C8 57 56 CB -- 037FB0
55 89 05 89 0C 56 8B 0A 46 8B 22 45 88 22 46 8B -- 037FC0
```

253

```
7E  C5  0A  75  00  13  7D  80  12  7E  C5  01  29  45  C6  02  --  037FD0
80  00  3E  45  C7  0E  7E  C5  08  EB  30  00  3E  45  C7  0E  --  037FE0
12  7E  C5  01  6A  24  76  FF  26  76  FF  00  00  40  45  C7  --  037FF0
75  FF  50  E4  2A  0D  45  8A  50  E4  2A  11  45  8A  01  FE  --  038000
89  0E  7E  C5  0E  C4  83  00  54  FE  87  9A  4A  75  FF  4C  --  038010
01  97  E9  03  74  00  3D  83  24  7E  C5  58  55  89  56  45  --  038020
8B  12  7E  C5  04  45  89  0E  7E  C5  0E  45  8B  0A  7E  C5  --  038030
7E  C5  36  55  89  34  45  89  0E  7E  C5  48  55  8B  46  45  --  038040
88  1E  46  8B  1F  45  88  0E  7E  C5  E4  2A  0D  45  8A  12  --  038050
7E  C5  3B  75  02  1E  7E  83  06  74  00  1E  7E  83  27  45  --  038060
83  06  75  00  01  3D  68  45  8B  0E  74  00  20  7D  80  0E  --  038070
45  8B  1B  75  00  20  7D  80  0E  7E  C5  1B  74  00  6A  7D  --  038080
09  75  00  01  3D  05  8B  42  7D  C5  13  75  00  01  3D  46  --  038090
00  24  45  C6  0E  7E  C5  07  EB  01  24  45  C6  0E  7E  C5  --  0380A0
2D  1C  56  1B  1A  46  2B  4C  55  8B  4A  45  8B  12  7E  C5  --  0380B0
46  8B  54  55  89  52  45  89  0E  7E  C5  00  DA  83  00  01  --  0380C0
95  89  00  8A  85  89  50  55  89  4E  45  89  18  56  8B  16  --  0380D0
6A  00  D8  E9  03  74  01  20  7E  83  00  28  45  C6  00  8C  --  0380E0
5C  EE  D0  9A  4A  75  FF  4C  75  FF  12  7E  C5  02  6A  00  --  0380F0
4A  45  8B  12  7E  C5  1E  45  88  0E  7E  C5  08  C4  83  00  --  038100
FF  26  76  FF  14  55  89  12  45  89  0E  7E  C5  4C  55  8B  --  038110
0D  45  8A  50  E4  2A  11  45  8A  12  7E  C5  00  6A  24  76  --  038120
C4  83  00  54  FE  87  9A  4A  75  FF  4C  75  FF  50  E4  2A  --  038130
1C  56  8B  1A  46  8B  2E  55  89  2C  45  89  0E  7E  C5  0E  --  038140
89  0E  7E  C5  0E  45  8B  12  7E  C5  1A  55  89  18  45  89  --  038150
08  3D  00  08  0D  FE  46  89  5F  74  04  1F  7D  80  06  45  --  038160
46  F7  00  00  FC  46  C7  4E  EB  01  28  45  C6  06  75  00  --  038170
46  F7  FC  46  89  00  40  0D  FC  46  8B  09  74  00  01  FE  --  038180
46  F7  FC  46  89  00  80  0D  FC  46  8B  09  74  00  02  FE  --  038190
46  F7  FC  46  89  00  10  0D  FC  46  8B  09  74  00  04  FE  --  0381A0
46  8B  FC  46  89  00  20  0D  FC  46  8B  09  74  00  08  FE  --  0381B0
00  02  C8  57  56  CB  5E  5F  C9  08  45  89  0E  7E  C5  FC  --  0381C0
8B  0E  7E  C5  62  45  89  0A  7E  C5  05  8B  0E  7E  C5  00  --  0381D0
7E  C5  08  45  8B  0E  7E  C5  64  45  89  0A  7E  C5  02  45  --  0381E0
68  45  89  0A  7E  C5  04  45  8B  0E  7E  C5  66  45  89  0A  --  0381F0
7E  C5  6A  45  89  0A  7E  C5  06  45  8B  0E  7E  C5  01  FE  --  038200
20  45  C6  6E  45  89  6C  45  89  0A  7E  C5  0A  45  8B  0E  --  038210
48  45  C7  1A  74  FF  12  7E  83  4A  45  89  12  46  8B  01  --  038220
48  45  89  E0  D3  CE  8B  48  45  8B  4E  12  76  8B  00  01  --  038230
C9  04  00  4C  45  C7  0A  7E  C5  08  EB  08  00  4C  45  C7  --  038240
89  68  45  8B  0A  7E  C5  00  00  36  C8  57  56  CB  5E  5F  --  038250
2E  9B  EE  56  89  EC  46  89  58  55  8B  56  45  8B  EA  46  --  038260
52  65  DA  9B  EC  46  DB  9B  E2  5E  DD  9B  A2  6A  06  DF  --  038270
C4  83  00  64  59  06  9A  00  5C  ED  99  9A  E2  76  DC  9B  --  038280
89  40  08  C4  83  00  5C  ED  F9  9A  00  5C  ED  99  9A  08  --  038290
D1  24  77  00  03  3D  0E  46  8B  F0  00  F4  46  C7  FE  46  --  0382A0
73  4A  73  43  73  43  73  3C  73  34  A7  FF  2E  D8  8B  E0  --  0382B0
46  C7  05  EB  80  00  F6  46  C7  0C  EB  F0  00  F6  46  C7  --  0382C0
2A  1F  45  8A  0E  74  04  1F  7D  80  0A  7E  C5  40  00  F6  --  0382D0
09  E8  C1  F6  46  8B  F6  46  89  02  E8  C1  F6  66  F7  E4  --  0382E0
7D  80  0A  7E  C5  0F  7E  FC  46  3B  FE  46  8B  FC  46  89  --  0382F0

45  75  02  0E  7E  83  06  74  02  27  7D  80  0C  74  00  27  --  038300
E7  C1  FE  7E  8B  E8  56  89  E6  46  89  D2  2B  F4  46  8B  --  038310
72  07  77  E8  56  3B  F2  56  89  F0  46  89  99  C7  8B  09  --  038320
80  06  74  00  27  7D  80  0A  7E  C5  19  76  E6  46  3B  1E  --  038330
8B  01  B1  E9  10  75  05  C7  10  7E  C5  0A  75  02  27  7D  --  038340
8D  16  01  96  E9  03  75  02  0E  7E  83  01  A5  E9  F0  46  --  038350
83  00  5C  EF  7A  9A  50  52  D2  2B  F6  46  8B  50  EC  46  --  038360
2E  9B  00  97  E9  03  76  01  EA  7E  83  FA  46  89  08  C4  --  038370
```

```
DD 9B A2 6A 06 DF 2E 9B D2 5E DD 9B A2 6A 06 DF -- 038380
ED AF 9A 50 E2 5E DD 9B A2 6A 06 DF 2E 9B DA 5E -- 038390
ED 99 9A E2 76 DC 9B EC 4E DA 9B 02 C4 83 00 5C -- 0383A0
DC 9B DA 4E DC 9B 08 C4 83 00 64 59 06 9A 00 5C -- 0383B0
89 08 C4 83 00 5C EE 2F 9A 00 5C ED 99 9A D2 46 -- 0383C0
77 07 72 F2 56 3B D2 2B F6 46 8B F2 56 89 F0 46 -- 0383D0
9B A2 6A 06 DF 2E 9B FA 4E FF 26 73 F0 46 3B 2B -- 0383E0
DF 2E 9B DA 5E DD 9B A2 6A 06 DF 2E 9B D2 5E DD -- 0383F0
46 8B 91 EB FA 76 FF E2 5E DD 9B A2 6A 06 01 FE -- 038400
F7 D2 2B FF FF 05 FA 46 8B 00 8E E9 F8 46 89 FA -- 038410
CA 5E DD 9B A2 6A 06 DF 2E 9B F8 46 89 40 EA 76 -- 038420
ED AF 9A EA 76 FF D2 5E DD 9B A2 6A 06 DF 2E 9B -- 038430
E2 5E DD 9B E8 D9 9B DA 5E DD 9B 02 C4 83 00 5C -- 038440
9B E2 66 DC 9B 02 C4 83 00 5C ED AF 9A F8 76 FF -- 038450
00 5C ED 99 9A D2 76 DC 9B EC 4E DA 9B DA 4E DC -- 038460
5C ED 99 9A CA 4E DC 9B 08 C4 83 00 64 59 06 9A -- 038470
8B F2 56 89 F0 46 89 08 C4 83 00 5C EE 2F 9A 00 -- 038480
05 73 F0 46 0A 77 07 72 F2 56 3B D2 2B F6 46 -- 038490
52 D2 2B C7 8B FF C7 83 F8 7E 8B 81 EB F8 4E FF -- 0384A0
00 5C EE E8 9A 50 52 F8 46 8B 50 EC 46 8D 16 50 -- 0384B0
2B F2 56 8B F0 46 8B E8 56 89 E6 46 89 08 C4 83 -- 0384C0
8B 08 C4 83 00 5C EF 84 9A 50 52 E8 56 1B E6 46 -- 0384D0
1C FB 81 FE 64 E9 03 73 0E 77 00 F9 83 CA 8B D8 -- 0384E0
89 0A 7E C5 09 E0 C1 FE 46 8B FE 5B E9 03 77 0C -- 0384F0
0A 7E C5 00 00 0C C8 57 56 CB 5E 5F C9 9B 3C 45 -- 038500
8B 16 75 02 27 7D 80 00 92 E9 03 75 00 1C 7D 80 -- 038510
C6 00 22 45 C6 01 23 45 C6 0E 72 00 01 3D 68 45 -- 038520
80 0A 7E C5 00 23 45 C6 0A 7E C5 07 EB 00 1C 45 -- 038530
3C 45 8B F6 46 89 E4 2A 1F 45 8A 15 74 04 1F 7D -- 038540
3C 45 8B 0A 7E C5 06 EB F6 76 F7 D2 2B 02 E0 C1 -- 038550
45 8B 57 56 0B 74 00 23 7D 80 0A 7E C5 F8 46 89 -- 038560
FF 12 76 FF F8 76 FF 57 56 05 EB 50 F8 46 03 4C -- 038570
83 10 7E C5 FE 46 89 5E 5F 00 5C BF B8 9A 10 76 -- 038580
02 C4 83 00 64 5D 04 9A 50 01 77 E9 03 74 00 3D -- 038590
45 C6 0A 7E C5 07 EB 32 55 89 30 45 89 0A 7E C5 -- 0385A0
E9 03 7E 0E 46 3B FC 46 8B 00 00 FC 46 C7 00 23 -- 0385B0
7D 80 00 CB E9 03 75 00 22 7D 80 0A 7E C5 00 C7 -- 0385C0
00 64 4E A1 9A 01 6A 02 6A 00 BE E9 03 75 00 24 -- 0385D0
89 0C 5E 8E 0A 7E 03 FB 8B 2A FC 5E 6B 04 C4 83 -- 0385E0
3C 75 FF 0A 7E C5 57 56 01 08 E9 76 55 89 74 45 -- 0385F0
89 5E 5F 00 5C BF B8 9A 10 76 FF 12 76 FF 01 FE -- 038600
45 89 0C 5E 8E 0A 7E 03 FA 8B 2A FC 56 6B FE 46 -- 038610
9A FE 76 FF 00 E4 E9 03 74 00 3D 83 10 7E C5 7C -- 038620
0A 7E 03 FB 8B 2A FC 5E 6B 02 C4 83 00 64 5D 04 -- 038630
12 76 FF 00 6A 57 56 72 55 89 70 45 89 0C 5E 8E -- 038640
FA 8B 2A FC 56 6B 5E 5F 00 5C BF 98 9A 10 76 FF -- 038650
74 00 3D 83 10 7E C5 7E 45 89 0C 5E 8E 0A 7E 03 -- 038660
0C 5E 8E 0A 7E 03 F8 8B 2A FC 46 6B 00 9C E9 03 -- 038670
C5 40 0E 46 8B FF 2E E9 FC 46 FF 00 00 89 85 C6 -- 038680
7D 80 0A 7E C5 4B EB 02 6A 79 EB 25 45 88 0A 7E -- 038690

45 8B 50 00 56 05 0A 46 8B 0C 76 FF 3F 74 00 24 -- 0386A0
3C 45 8B 0A 76 C4 F6 56 89 F4 46 89 54 55 8B 52 -- 0386B0
F6 56 13 F4 46 03 50 54 13 26 4E 44 03 26 D2 2B -- 0386C0
02 6A 50 FA 46 89 08 C4 83 00 5C EF 7A 9A 50 52 -- 0386D0
04 C4 83 00 64 4E A1 9A 01 6A 03 04 68 FE FA E9 -- 0386E0
89 78 45 89 0C 5E 8E 0A 7E 03 FB 8B 2A FC 5E 6B -- 0386F0
10 6D 05 C7 10 7E C5 FE F1 E9 03 74 C2 0B 7A 55 -- 038700
00 05 C7 28 7E C5 00 01 06 C8 57 56 CB 5E 5F C9 -- 038710
46 8B 00 01 FE FA 86 C7 11 74 00 80 0E 46 F7 00 -- 038720
```

```
F7 00 00 FE FA 86 C7 06 EB 0E 46 89 FF 7F 25 0E -- 038730
25 18 46 8B 00 01 FE FC 86 C7 11 74 00 80 18 46 -- 038740
2A 76 FF 00 00 FE FC 86 C7 06 EB 18 46 89 FF 7F -- 038750
9A 0A 76 FF 0C 76 FF 50 FF 00 86 8D 16 28 76 FF -- 038760
E9 03 74 00 3D 83 28 7E C5 0C C4 83 00 54 F7 DA -- 038770
FF 50 FF 00 86 8D 16 10 76 FF 57 2A 76 FF 00 F8 -- 038780
00 2C 6F D3 9A 1C 76 FF 1E 76 FF 20 76 FF 22 76 -- 038790
14 68 00 CC E9 03 74 00 3D 83 28 7E C5 12 C4 83 -- 0387A0
05 89 24 7E C5 04 C4 83 00 64 4E A1 9A 01 6A 02 -- 0387B0
6D 05 C7 28 7E C5 0A 75 05 0B 02 45 8B 02 55 89 -- 0387C0
24 7E C5 12 76 FF 14 76 FF 16 76 FF 00 A6 E9 10 -- 0387D0
2A 76 FF 0A C4 83 00 2C 78 F6 9A 35 FF 02 75 FF -- 0387E0
76 FF 18 76 FF FE FA B6 FF FE FC B6 FF 28 76 FF -- 0387F0
00 86 8D 16 1C 76 FF 1E 76 FF 20 76 FF 22 01 FE -- 038800
0A 76 FF 0C 76 FF 35 FF 02 75 FF 24 7E C5 50 FF -- 038810
4C 75 00 3D 83 28 7E C5 1E C4 83 00 2C 70 31 9A -- 038820
06 7D 00 FE FE BE 83 FE FE 86 89 05 8B 14 7E C5 -- 038830
FF 1A 76 FF 28 76 FF 2A 76 FF FE FE 86 89 D8 F7 -- 038840
00 2C 72 CF 9A 35 FF 02 75 FF 24 7E C5 FE FE B6 -- 038850
FF 24 7E C5 0E 76 FF 28 76 FF 2A 76 FF 0C C4 83 -- 038860
CB 5E 5F C9 0A C4 83 00 2C 75 81 9A 35 FF 02 75 -- 038870
89 0E 46 8B 00 20 45 C6 0A 7E C5 EC 8B 55 57 56 -- 038880
5F C9 44 55 89 42 45 89 12 56 8B 10 46 8B 46 45 -- 038890
55 8B 30 45 8B 0A 7E C5 00 00 18 C8 57 56 CB 5E -- 0388A0
FA 46 89 1A 55 8B 18 45 8B F6 56 89 F4 46 89 32 -- 0388B0
8B F0 46 89 64 45 8B F2 46 89 62 45 8B FC 56 89 -- 0388C0
56 89 EA 46 89 50 55 8B 4E 45 8B EE 46 89 66 45 -- 0388D0
56 3B D2 2B F8 46 8B 00 00 FE 46 C7 F8 46 89 EC -- 0388E0
03 E7 D1 FE 7E 8B 46 77 FA 46 3B 4B 77 07 72 FC -- 0388F0
EC 56 1B EA 46 2B D2 2B F8 46 8B F6 5E 8E F4 7E -- 038900
46 89 EE 46 03 F0 46 8B E8 46 89 EE 46 8B 05 89 -- 038910
40 F8 46 03 F2 46 8B 09 76 EE 46 3B E8 46 8B EE -- 038920
A9 EB FE 46 FF F8 46 89 F8 46 03 F2 46 8B 06 EB -- 038930
55 57 56 CB 5E 5F C9 16 45 89 0A 7E C5 FE 46 8B -- 038940
5E 5F C9 05 89 0A 7E C5 16 45 8B 0E 7E C5 EC 8B -- 038950
46 8B 00 00 05 C7 16 7E C5 00 00 0A C8 57 56 CB -- 038960
5E 45 89 5C 55 89 5A 45 89 0A 7E C5 10 56 8B 0E -- 038970
80 2A 45 88 12 46 8B 21 45 88 14 46 8B 60 55 89 -- 038980
00 00 FA 46 C7 66 EB 00 29 45 C6 06 74 00 29 7D -- 038990
FA 46 6B 54 76 FA 46 3B E4 2A 25 45 8A 0A 7E C5 -- 0389A0
8B 57 56 3F 75 01 00 89 BD 80 0A 7E 03 F8 8B 2A -- 0389B0
75 FF 0A 7E 03 F8 8B 2A FA 46 6B 04 75 FF 0A 7E -- 0389C0
5E 5F 00 5C C1 FA 9A 16 76 FF 18 76 FF FF 6A 7E -- 0389D0
8B 2A FA 46 6B 01 54 E9 03 74 00 3D 83 16 7E C5 -- 0389E0
EB FA 46 FF 00 00 89 85 C6 0C 5E 8E 0A 7E 03 F8 -- 0389F0
89 F6 46 89 40 55 8B 3E 45 8B 0A 7E C5 9F 01 FE -- 038A00
FF 58 75 FF 50 00 34 05 0A 46 8B 0C 76 FF F8 56 -- 038A10
F8 56 13 F6 46 03 08 C4 83 00 5C EE E8 9A 56 75 -- 038A20
B9 00 D2 83 00 01 05 FA E2 D8 D1 EA D1 00 09 B9 -- 038A30

55 89 0E 45 89 0A 7E C5 FA E2 D2 D1 E0 D1 00 09 -- 038A40
80 00 26 45 C6 00 00 0C 45 C7 00 00 0A 45 C7 10 -- 038A50
C5 00 00 38 45 C7 00 00 3A 45 C7 0A 75 00 20 7D -- 038A60
2C 79 18 9A 57 0C 76 FF 0C 74 00 23 7D 80 0A 7E -- 038A70
FF 16 75 00 12 7E 83 00 00 FE 46 C7 04 C4 83 00 -- 038A80
3F 9A 0A 76 FF 0C 76 FF FE 76 FF 16 76 FF 18 76 -- 038A90
76 FF FE 76 FF 16 76 FF 18 76 FF 14 EB 00 2C 8A -- 038AA0
83 16 7E C5 0A C4 83 00 2C 7B B9 9A 0A 76 FF 0C -- 038AB0
8A 0A 7E C5 FE 46 FF 00 00 FC 46 C7 7D 75 00 3D -- 038AC0
C4 62 75 00 FC 7E 83 68 74 FE 46 3B E4 2A 25 45 -- 038AD0
```

256

```
4A  7F  08  7C  36  54  3B  26  60  55  8B  5E  45  8B  0A  76  --  038AE0
83  3B  78  00  60  7D  83  0A  7E  C5  44  73  34  44  3B  26  --  038AF0
76  FF  FE  76  FF  16  76  FF  18  76  FF  14  75  00  12  7E  --  038B00
FF  16  76  FF  18  76  FF  14  EB  00  2C  8A  3F  9A  57  0C  --  038B10
0A  C4  83  00  2C  7B  B9  9A  0A  76  FF  0C  76  FF  FE  76  --  038B20
EB  00  01  FC  46  C7  07  EB  91  74  00  3D  83  16  7E  C5  --  038B30
05  C7  10  7E  C5  00  00  0E  C8  57  56  CB  5E  5F  C9  88  --  038B40
0A  76  FF  0C  76  FF  0E  76  FF  50  FE  46  8D  16  00  00  --  038B50
7E  C5  FC  56  89  FA  46  89  0A  C4  83  00  2C  7D  1A  9A  --  038B60
52  50  F6  46  8D  16  FE  76  FF  1A  74  00  24  7D  80  0A  --  038B70
EB  00  2C  7E  48  9A  57  0C  76  FF  0E  76  FF  FA  76  FF  --  038B80
FF  FA  76  FF  FC  76  FF  50  F6  46  8D  16  FE  76  FF  1C  --  038B90
10  C4  83  00  2C  82  5C  9A  0A  76  FF  0C  76  FF  0E  76  --  038BA0
80  0C  5E  8E  0A  7E  03  F8  8B  2A  0E  46  6B  F2  46  89  --  038BB0
46  6B  04  75  FF  0A  7E  8B  57  56  31  75  01  00  89  BD  --  038BC0
FF  12  76  FF  FF  6A  7E  75  FF  0A  7E  03  F8  8B  2A  0E  --  038BD0
83  10  7E  C5  F4  46  89  5E  5F  00  5C  C1  FA  9A  10  76  --  038BE0
6A  04  75  FF  0A  7E  C5  57  56  00  AB  E9  03  74  00  3D  --  038BF0
03  F8  8B  2A  0E  46  6B  F6  76  FF  F8  76  FF  02  01  FE  --  038C00
00  5C  C1  DA  9A  10  76  FF  12  76  FF  7E  75  FF  0A  7E  --  038C10
FF  0A  7E  C5  57  56  7A  75  00  3D  83  10  7E  C5  5E  5F  --  038C20
FF  6A  7E  75  FF  0A  7E  03  F8  8B  2A  0E  46  6B  04  75  --  038C30
F4  46  89  5E  5F  00  5C  C1  FA  9A  10  76  FF  12  76  FF  --  038C40
04  75  FF  0A  7E  C5  57  56  4C  75  00  3D  83  10  7E  C5  --  038C50
FF  70  75  FF  72  75  FF  0A  7E  03  F8  8B  2A  0E  46  6B  --  038C60
76  FF  7E  75  FF  0A  7E  03  F8  8B  2A  0E  46  6B  F2  76  --  038C70
3D  83  10  7E  C5  5E  5F  00  5C  C1  BA  9A  10  76  FF  12  --  038C80
C6  0C  5E  8E  0A  7E  03  F8  8B  2A  0E  46  6B  11  75  00  --  038C90
7E  C5  00  00  10  C8  57  56  CB  5E  5F  C9  01  00  89  85  --  038CA0
0A  7E  03  FB  8B  2A  0E  5E  6B  60  55  8B  5E  45  8B  0A  --  038CB0
55  8B  52  45  8B  0A  7E  8B  00  86  95  89  00  84  85  89  --  038CC0
F4  46  89  40  55  8B  3E  45  8B  F2  56  89  F0  46  89  54  --  038CD0
5E  45  8B  50  00  56  05  0A  46  8B  0C  76  FF  F6  56  89  --  038CE0
00  5C  EE  E8  9A  50  52  00  D2  83  00  01  05  60  55  8B  --  038CF0
89  F2  56  1B  F0  46  2B  F6  56  13  F4  46  03  08  C4  83  --  038D00
5C  EF  6E  9A  50  52  02  00  68  00  6A  FA  56  89  F8  46  --  038D10
FC  46  89  FA  E2  D2  D1  E0  D1  00  09  B9  08  C4  83  00  --  038D20
D0  9A  F8  76  FF  FA  76  FF  02  00  68  00  6A  FE  56  89  --  038D30
83  02  00  FC  46  81  09  74  C2  0B  08  C4  83  00  5C  EE  --  038D40
8B  0C  5E  8E  0A  7E  03  F8  8B  2A  0E  46  6B  00  FE  56  --  038D50
89  00  8A  85  89  FA  56  1B  F8  46  2B  FE  56  8B  FC  46  --  038D60
7F  10  55  3B  FE  56  8B  FC  46  8B  0A  7E  8B  00  8C  95  --  038D70
55  8B  0E  45  8B  0A  7E  C5  2C  76  0E  45  3B  31  7C  07  --  038D80
0E  46  6B  0E  74  01  25  7D  80  FE  56  89  FC  46  89  10  --  038D90
05  C7  10  7E  C5  01  00  88  85  C6  0A  7E  03  F8  8B  2A  --  038DA0
8B  2A  0E  46  6B  00  00  05  C7  10  7E  C5  18  EB  00  01  --  038DB0
8B  FC  46  8B  00  00  88  85  C6  0C  5E  8E  0A  7E  03  F8  --  038DC0
8B  0A  7E  C5  00  00  2A  C8  57  56  CB  5E  5F  C9  FE  56  --  038DD0

8B  2A  0E  46  6B  F0  56  89  EE  46  89  58  55  8B  56  45  --  038DE0
89  F8  46  89  00  86  95  8B  00  84  85  8B  0A  7E  03  F8  --  038DF0
DE  46  89  54  55  8B  52  45  8B  0A  7E  8B  FA  56  01  FE  --  038E00
45  8B  0C  46  8E  F7  03  F0  8B  2A  0E  46  6B  E0  56  89  --  038E10
DE  46  03  00  8C  94  1B  26  00  8A  84  2B  26  D2  2B  3C  --  038E20
03  7D  0D  7F  F0  56  3B  F6  56  89  F4  46  89  E0  56  13  --  038E30
50  EE  46  8D  16  00  A3  E9  03  77  EE  46  3B  00  AB  E9  --  038E40
D8  8B  08  C4  83  00  5C  EF  74  9A  F4  76  FF  F6  76  FF  --  038E50
83  00  01  05  D1  1B  C3  2B  FA  56  8B  F8  46  8B  CA  8B  --  038E60
F6  76  FF  50  EE  46  8D  16  FA  56  89  F8  46  89  00  D2  --  038E70
7E  C5  F2  46  89  08  C4  83  00  5C  EE  D6  9A  F4  76  FF  --  038E80
```

```
DE  46  89  50  55  1B  4E  45  2B  F0  56  8B  EE  46  8B  0A  --  038E90
3B  2D  72  07  77  E0  56  3B  D2  2B  F2  46  8B  E0  56  89  --  038EA0
C5  0A  5E  C4  00  FA  5E  83  01  F8  6E  83  28  72  DE  46  --  038EB0
13  EE  46  03  D2  2B  C7  8B  F2  7E  2B  3C  7C  8B  0A  76  --  038EC0
C5  0A  5E  C4  48  EB  50  57  1B  26  4E  47  2B  26  F0  56  --  038ED0
7E  C5  E4  EB  D2  2B  C7  8B  F2  7E  2B  3C  7C  8B  0A  76  --  038EE0
0A  76  C4  E0  56  89  DE  46  89  54  55  8B  52  45  8B  0A  --  038EF0
00  8C  95  8B  00  8A  85  8B  FE  03  F8  8B  2A  0E  46  6B  --  038F00
46  2B  F0  56  13  EE  46  03  50  54  1B  26  4E  44  2B  26  --  038F10
F8  46  C7  77  79  00  FA  7E  83  FE  46  89  E0  56  1B  DE  --  038F20
50  55  8B  4E  45  8B  0A  7E  C5  00  00  FA  46  C7  00  00  --  038F30
89  DA  46  89  54  55  8B  52  45  8B  D8  56  89  D6  46  89  --  038F40
8B  00  8A  85  8B  0A  7E  03  F8  8B  2A  0E  46  6B  DC  56  --  038F50
46  6B  50  EE  46  8D  16  E0  56  89  DE  46  89  00  8C  95  --  038F60
05  00  86  95  8B  00  84  85  8B  0A  7E  03  F8  8B  2A  0E  --  038F70
03  08  C4  83  00  5C  EE  E2  9A  50  52  00  D2  83  00  01  --  038F80
56  1B  D6  46  2B  DC  56  1B  DA  46  2B  E0  56  13  DE  46  --  038F90
FC  46  89  09  E0  C1  09  E8  C1  FE  46  8B  FE  46  89  D8  --  038FA0
2A  0E  46  6B  02  00  FC  46  81  05  74  01  FF  FE  46  F7  --  038FB0
76  03  F2  8B  2A  0E  56  6B  0C  5E  8E  0A  7E  03  F8  8B  --  038FC0
2D  72  54  8B  26  70  44  03  26  FC  46  8B  0C  46  8E  0A  --  038FD0
25  7D  80  0A  7E  8B  00  96  95  89  00  94  85  89  02  00  --  038FE0
FF  00  96  B5  FF  57  56  1A  74  00  18  7E  83  20  75  01  --  038FF0
EC  9A  02  00  68  70  75  FF  72  75  FF  00  94  B5  01  FE  --  039000
46  89  50  55  8B  4E  45  8B  0A  7E  C5  5E  5F  00  5C  FE  --  039010
E0  56  89  DE  46  89  54  55  8B  52  45  8B  DC  56  89  DA  --  039020
03  F0  8B  2A  0E  46  6B  0A  7E  03  F8  8B  2A  0E  46  6B  --  039030
26  00  8A  84  2B  26  D2  2B  FC  46  8B  0C  46  8E  0A  76  --  039040
E0  56  13  DE  46  03  F0  56  1B  EE  46  2B  00  8C  94  1B  --  039050
7E  83  00  8C  95  89  00  8A  85  89  DC  56  13  DA  46  03  --  039060
03  F8  8B  2A  0E  46  6B  02  00  FC  6E  81  05  74  00  18  --  039070
89  00  80  85  89  FA  56  8B  F8  46  8B  0C  5E  8E  0A  7E  --  039080
8B  10  46  8B  CA  8B  D8  8B  D2  2B  FC  46  8B  00  82  95  --  039090
C5  10  55  89  0E  45  89  0A  7E  8B  D1  1B  C3  2B  12  56  --  0390A0
0A  7E  03  F8  8B  2A  0E  46  6B  02  55  89  05  89  14  7E  --  0390B0
56  1B  F8  46  2B  00  86  95  8B  00  84  85  8B  0C  5E  8E  --  0390C0
0A  7E  03  FA  8B  2A  0E  56  6B  00  D2  83  00  01  05  FA  --  0390D0
8B  F8  46  8B  00  FA  5E  83  01  F8  6E  83  00  8E  85  89  --  0390E0
8B  2A  0E  46  6B  60  55  89  5E  45  89  0A  7E  8B  FA  56  --  0390F0
95  89  00  90  85  89  FA  56  8B  F8  46  8B  0A  7E  03  F8  --  039100
55  8B  74  45  8B  0A  7E  03  F8  8B  2A  0E  46  6B  00  92  --  039110
09  74  00  1C  7D  80  0A  7E  8B  E8  56  89  E6  46  89  76  --  039120
03  F8  8B  2A  0E  46  6B  15  EB  00  00  05  C7  E6  7E  C5  --  039130
7E  C5  05  89  E6  7E  C5  00  8A  85  8B  0C  5E  8E  0A  7E  --  039140
F8  8B  2A  0E  46  6B  00  8D  E9  03  74  00  22  7D  80  0A  --  039150
1C  7D  80  0A  7E  8B  E2  46  89  00  8E  85  8B  0A  7E  03  --  039160
C7  EC  56  89  EA  46  89  2E  55  8B  2C  45  8B  40  74  00  --  039170

83  E4  7E  8B  5B  73  E2  46  3B  E4  46  8B  00  01  E4  46  --  039180
46  2B  D2  2B  05  8B  E8  5E  8E  E6  7E  03  E7  D1  FF  C7  --  039190
46  FF  05  89  E6  7E  03  E7  D1  E4  7E  8B  EC  56  1B  EA  --  0391A0
27  73  E2  46  3B  E4  46  8B  00  01  E4  46  C7  D1  EB  E4  --  0391B0
05  8B  E8  5E  8E  E6  7E  03  E7  D1  FF  C7  83  E4  7E  8B  --  0391C0
E6  7E  03  E7  D1  E4  7E  8B  F0  56  1B  EE  46  2B  D2  2B  --  0391D0
57  56  CB  5E  5F  C9  FC  46  8B  D1  EB  E4  46  FF  05  89  --  0391E0
F0  46  89  58  55  8B  56  45  8B  0A  7E  C5  00  00  14  C8  --  0391F0
85  8B  0A  7E  03  F8  8B  2A  0E  46  6B  F2  56  89  01  FE  --  039200
8B  0A  7E  8B  FC  56  89  FA  46  89  00  86  95  8B  00  84  --  039210
8B  2A  0E  46  6B  EE  56  89  EC  46  89  54  55  8B  52  45  --  039220
00  8A  84  2B  26  D2  2B  3C  45  8B  0C  46  8E  F7  03  F0  --  039230
```

258

```
56 89 F6 46 89 EE 56 13 EC 46 03 00 8C 94 1B 26 -- 039240
46 8D 16 71 76 F0 46 3B 76 7C 07 7F F2 56 3B F8 -- 039250
08 C4 83 00 5C EF 74 9A F6 76 FF F8 76 FF 50 F0 -- 039260
01 05 D1 1B C3 2B FC 56 8B FA 46 8B CA 8B D8 8B -- 039270
FF 50 F0 46 8D 16 FC 56 89 FA 46 89 00 D2 83 00 -- 039280
F4 46 89 08 C4 83 00 5C EE D6 9A F6 76 FF F8 76 -- 039290
89 50 55 1B 4E 45 2B F2 56 8B F0 46 8B 0A 7E C5 -- 0392A0
72 07 77 EE 56 3B D2 2B F4 46 8B EE 56 89 EC 46 -- 0392B0
7E 83 00 FC 5E 83 01 FA 6E 83 08 72 EC 46 3B 0D -- 0392C0
76 FF 00 00 FC 46 C7 00 00 FA 46 C7 0A 79 00 FC -- 0392D0
83 F1 9A 0A 76 FF 0C 76 FF 0E 76 FF FA 76 FF FC -- 0392E0
7E 03 F8 8B 2A 0E 46 6B FE 46 89 0A C4 83 00 2C -- 0392F0
0C 46 8E 0A 76 03 F2 8B 2A 0E 56 6B 0C 5E 8E 0A -- 039300
85 89 02 00 2D 72 54 8B 26 70 44 03 26 FE 46 8B -- 039310
83 20 75 01 25 7D 80 0A 7E 8B 00 96 95 89 00 94 -- 039320
FF 00 94 B5 FF 00 96 B5 FF 57 56 1A 74 00 18 7E -- 039330
83 5E 5F 00 5C FE EC 9A 02 00 68 70 75 FF 72 75 -- 039340
8B D2 2B FE 46 8B 02 00 FE 6E 81 05 74 00 18 7E -- 039350
0A 7E C5 D1 1B C3 2B 12 56 8B 10 46 8B CA 8B D8 -- 039360
46 8B 02 55 89 05 89 14 7E C5 10 55 89 0E 45 89 -- 039370
45 8B 0A 7E C5 00 00 48 C8 57 56 CB 5E 5F C9 FE -- 039380
F8 8B 2A 0E 46 6B F6 56 89 F4 46 89 60 55 8B 5E -- 039390
8B F2 56 89 F0 46 89 7A 55 8B 78 45 8B 0A 7E 03 -- 0393A0
F8 8B 2A 0E 46 6B EE 46 89 E4 2A 22 45 8A 0A 7E -- 0393B0
56 89 E8 46 89 00 8C 95 8B 00 8A 85 8B 0A 7E 03 -- 0393C0
95 8B 00 84 85 8B 0A 7E 03 F8 8B 2A 0E 46 6B EA -- 0393D0
E4 2A 1C 45 8A 0A 7E 8B FE 56 89 FC 46 89 00 86 -- 0393E0
80 DA 56 89 D8 46 89 58 55 8B 56 45 8B EC 46 89 -- 0393F0
CE 46 89 68 45 8B 02 D6 E9 03 75 00 20 7D 01 FE -- 039400
00 DC 46 C7 CA 46 89 6C 45 8B CC 46 89 6A 45 8B -- 039410
7F 12 56 3B F6 56 8B F4 46 8B 00 00 E6 46 C7 00 -- 039420
56 3B F6 56 8B F4 46 8B 5B 72 10 46 3B 60 7C 07 -- 039430
F6 56 8B F4 46 8B 49 77 FC 46 3B 4E 7F 07 7C FE -- 039440
03 CC 46 8B C8 46 89 CA 46 8B FA 56 89 F8 46 89 -- 039450
CE 7E 8B 08 76 CA 46 3B C8 46 8B CA 46 89 CA 46 -- 039460
46 8B CA 8B D8 8B D2 2B CE 46 8B 03 EB C7 8B 47 -- 039470
46 FF F6 56 89 F4 46 89 D1 1B C3 2B F6 56 8B F4 -- 039480
89 B8 46 89 50 55 8B 4E 45 8B 0A 7E C5 93 EB DC -- 039490
46 6B BE 56 89 BC 46 89 54 55 8B 52 45 8B BA 56 -- 0394A0
89 00 8C 95 8B 00 8A 85 8B 0A 7E 03 F8 8B 2A 0E -- 0394B0
FE 56 8B FC 46 8B 50 D8 46 8D 16 C2 56 89 C0 46 -- 0394C0
E2 9A 50 52 00 D2 83 00 01 05 FA 56 1B F8 46 2B -- 0394D0
1B BC 46 2B C2 56 13 C0 46 03 08 C4 83 00 5C EE -- 0394E0
E0 C1 09 E8 C1 C6 46 89 BA 56 1B B8 46 2B BE 56 -- 0394F0
02 00 C4 46 81 05 74 01 FF C6 46 F7 C4 46 89 09 -- 039500
C4 C2 56 89 C0 46 89 50 55 8B 4E 45 8B 0A 7E C5 -- 039510

2B D2 2B C4 46 8B FE 03 F8 8B 2A 0E 46 6B 0A 76 -- 039520
44 03 26 DA 56 1B D8 46 2B 00 8C 95 1B 00 8A 85 -- 039530
56 89 E8 46 89 C2 56 13 C0 46 03 54 54 13 26 52 -- 039540
F0 7E C5 09 75 01 EC 7E 83 19 74 00 EE 7E 83 EA -- 039550
0F EB 05 89 F0 7E C5 E8 46 8B 19 EB 00 00 05 C7 -- 039560
16 D6 56 89 D4 46 89 2E 55 8B 2C 45 8B 0A 7E C5 -- 039570
FA 56 1B F8 46 2B FE 56 8B FC 46 8B 50 D8 46 8D -- 039580
EA 56 19 E8 46 29 08 C4 83 00 5C EE E2 9A 50 52 -- 039590
89 60 55 8B 5E 45 8B CA 46 89 6C 45 8B 0A 7E C5 -- 0395A0
8B 00 00 D2 46 C7 00 00 D0 46 C7 F6 56 89 F4 46 -- 0395B0
00 F1 E9 03 75 D0 46 3B 08 75 D2 56 3B 99 DC 46 -- 0395C0
4B 75 01 80 E6 7E 81 00 A6 E9 03 74 00 EE 7E 83 -- 0395D0
03 04 68 28 75 03 00 85 0B 03 02 85 8B F0 7E C5 -- 0395E0
```

```
00 85 89 F0 7E C5 04 C4 83 00 64 4E A1 9A 01 6A -- 0395F0
00 03 00 85 C7 03 00 BD C5 03 02 95 89 03 01 FE -- 039600
95 8B 03 00 85 8B F0 7E C5 00 00 03 02 85 C7 00 -- 039610
EC 7E 83 00 00 E6 46 C7 F2 56 89 F0 46 89 03 02 -- 039620
46 2B F6 56 8B F4 46 8B 50 D4 46 8D 16 1D 74 00 -- 039630
21 EB 08 C4 83 00 5C EE E2 9A 50 52 FA 56 1B F8 -- 039640
56 1B F8 46 2B F6 56 8B F4 46 8B 50 D8 46 8D 16 -- 039650
56 13 E8 46 03 08 C4 83 00 5C EE E2 9A 50 52 FA -- 039660
46 FF 05 89 F2 5E 8E F0 7E 03 E7 D1 E6 7E 8B EA -- 039670
CA 46 89 CA 46 03 CC 46 8B C8 46 89 CA 46 8B E6 -- 039680
03 EB C7 8B 47 CE 7E 8B 08 76 CA 46 3B C8 46 8B -- 039690
2B F6 56 8B F4 46 8B CA 8B D8 8B D2 2B CE 46 8B -- 0396A0
D2 4E 11 01 D0 46 83 F6 56 89 F4 46 89 D1 1B C3 -- 0396B0
8B 0C 5E 8E 0A 7E 03 F8 8B 2A 0E 46 6B FE FE E9 -- 0396C0
E9 6C 45 89 0A 7E 8B CA 46 8B 00 98 85 89 CA 46 -- 0396D0
56 89 E2 46 89 44 55 8B 42 45 8B 0A 7E C5 02 A1 -- 0396E0
DC 46 C7 DE 46 89 46 45 8B E0 46 89 38 45 8B E4 -- 0396F0
12 56 3B F6 56 8B F4 46 8B 00 00 E6 46 C7 00 00 -- 039700
3B F6 56 8B F4 46 8B 42 72 10 46 3B 47 7C 07 7F -- 039710
56 8B F4 46 8B 30 77 FC 46 3B 35 7F 07 7C FE 56 -- 039720
8E E2 7E 03 E7 D1 E0 7E 8B FA 56 89 F8 46 89 F6 -- 039730
99 40 E0 46 8B F6 56 19 F4 46 29 99 05 8B E4 5E -- 039740
45 8B 0A 7E C5 AC EB DC 46 FF E0 56 89 DE 7E F7 -- 039750
E0 46 89 38 45 8B F6 56 89 F4 46 89 60 55 8B 5E -- 039760
8B 52 45 8B BA 56 89 B8 46 89 50 55 8B 4E 45 8B -- 039770
7E 03 F8 8B 2A 0E 46 6B BE 56 89 BC 46 89 54 55 -- 039780
16 C2 56 89 C0 46 89 00 8C 95 8B 00 8A 85 8B 0A -- 039790
FA 56 1B F8 46 2B FE 56 8B FC 46 8B 50 D8 46 8D -- 0397A0
08 C4 83 00 5C EE E2 9A 50 52 00 D2 83 00 01 05 -- 0397B0
1B B8 46 2B BE 56 1B BC 46 2B C2 56 13 C0 46 03 -- 0397C0
46 F7 C4 46 89 09 E0 C1 09 E8 C1 C6 46 89 BA 56 -- 0397D0
4E 45 8B 0A 7E C5 02 00 C4 46 81 05 74 01 FF C6 -- 0397E0
2A 0E 46 6B 0A 76 C4 C2 56 89 C0 46 89 50 55 8B -- 0397F0
1B 00 8A 85 2B D2 2B C4 46 8B FE 03 F8 8B 01 FE -- 039800
54 13 26 52 44 03 26 DA 56 1B D8 46 2B 00 8C 95 -- 039810
EE 7E 83 EA 56 89 E8 46 89 C2 56 13 C0 46 03 54 -- 039820
00 00 05 C7 F0 7E C5 09 75 01 EC 7E 83 19 74 00 -- 039830
8B 0A 7E C5 0F EB 05 89 F0 7E C5 E8 46 8B 19 EB -- 039840
50 D8 46 8D 16 D6 56 89 D4 46 89 2E 55 8B 2C 45 -- 039850
E2 9A 50 52 FA 56 1B F8 46 2B FE 56 8B FC 46 8B -- 039860
00 D0 46 C7 EA 56 19 E8 46 29 08 C4 83 00 5C EE -- 039870
3B 08 75 D2 56 3B 99 DC 46 8B 00 00 D2 46 C7 00 -- 039880
00 A6 E9 03 74 00 EE 7E 83 00 E5 E9 03 75 D0 46 -- 039890
85 0B 03 02 85 8B F0 7E C5 4B 75 01 80 E6 7E 81 -- 0398A0
C4 83 00 64 4E A1 9A 01 6A 03 04 68 28 75 03 00 -- 0398B0

03 00 BD C5 03 02 95 89 03 00 85 89 F0 7E C5 04 -- 0398C0
8B F0 7E C5 00 00 03 02 85 C7 00 00 03 00 85 C7 -- 0398D0
E6 46 C7 F2 56 89 F0 46 89 03 02 95 8B 03 00 85 -- 0398E0
F4 46 8B 50 D4 46 8D 16 1D 74 00 EC 7E 83 00 00 -- 0398F0
00 5C EE E2 9A 50 52 FA 56 1B F8 46 2B F6 56 8B -- 039900
F6 56 8B F4 46 8B 50 D8 46 8D 16 21 EB 08 C4 83 -- 039910
08 C4 83 00 5C EE E2 9A 50 52 FA 56 1B F8 46 2B -- 039920
5E 8E F0 7E 03 E7 D1 E6 7E 8B EA 56 13 E8 46 03 -- 039930
89 F8 46 89 F6 56 8B F4 46 8B E6 46 FF 05 89 F2 -- 039940
99 05 8B E4 5E 8E E2 7E 03 E7 D1 E0 7E 8B FA 56 -- 039950
56 89 DE 7E F7 99 40 E0 46 8B F6 56 19 F4 46 29 -- 039960
C5 E0 46 8B FF 0A E9 00 D2 56 83 01 D0 46 83 E0 -- 039970
45 89 0A 7E C5 F6 56 8B F4 46 8B 38 45 89 0A 7E -- 039980
F4 46 8B 0A 7E 03 F8 8B 2A 0E 46 6B 60 55 89 5E -- 039990
```

```
8B 2A 0E 46 6B 00 92 95 89 00 90 85 89 F6 56 8B -- 0399A0
8B 2A 0E 46 6B 00 8E 85 89 DC 46 8B 0A 7E 03 F8 -- 0399B0
95 89 00 80 85 89 FA 56 8B F8 46 8B 0A 7E 03 F8 -- 0399C0
C5 00 00 10 C8 57 56 CB 5E 5F C9 C4 46 8B 00 82 -- 0399D0
50 FE 46 8D 16 50 F0 46 8D 16 00 00 05 C7 10 7E -- 0399E0
C4 83 00 2C 8B CA 9A 0A 76 FF 0C 76 FF 0E 76 FF -- 0399F0
00 24 7D 80 0A 7E C5 FC 56 89 FA 46 89 0E 01 FE -- 039A00
15 9A 57 0C 76 FF 0E 76 FF 50 52 FE 76 FF 13 74 -- 039A10
76 FF FA 76 FF FC 76 FF FE 76 FF 17 EB 00 2C 8D -- 039A20
89 0C C4 83 00 2C 90 C6 9A 0A 76 FF 0C 76 FF 0E -- 039A30
BD 80 0C 5E 8E 0A 7E 03 F8 8B 2A 0E 46 6B F6 46 -- 039A40
0E 46 6B 04 75 FF 0A 7E 8B 57 56 31 75 01 00 89 -- 039A50
76 FF 12 76 FF FF 6A 7E 75 FF 0A 7E 03 F8 8B 2A -- 039A60
3D 83 10 7E C5 F8 46 89 5E 5F 00 5C C1 FA 9A 10 -- 039A70
7E C5 57 56 62 74 00 F0 7E 83 00 DC E9 03 74 00 -- 039A80
2A 0E 46 6B FA 76 FF FC 76 FF 02 6A 04 75 FF 0A -- 039A90
DA 9A 10 76 FF 12 76 FF 7E 75 FF 0A 7E 03 F8 8B -- 039AA0
00 A2 E9 03 74 00 3D 83 10 7E C5 5E 5F 00 5C C1 -- 039AB0
7E 03 F8 8B 2A 0E 46 6B 04 75 FF 0A 7E C5 57 56 -- 039AC0
5C C1 FA 9A 10 76 FF 12 76 FF FF 6A 7E 75 FF 0A -- 039AD0
7E 83 74 75 00 3D 83 10 7E C5 F8 46 89 5E 5F 00 -- 039AE0
0C 5E 8E 0A 7E 03 F8 8B 2A 0E 46 6B 17 74 00 FE -- 039AF0
8B 2A 0E 46 6B 12 EB 02 00 05 72 55 8B 70 45 8B -- 039B00
F2 46 89 72 55 8B 70 45 8B 0C 5E 8E 0A 7E 03 F8 -- 039B10
F6 76 FF 50 52 04 75 FF 0A 7E C5 57 56 F4 56 89 -- 039B20
FF 12 76 FF 7E 75 FF 0A 7E 03 F8 8B 2A 0E 46 6B -- 039B30
75 00 3D 83 10 7E C5 5E 5F 00 5C C1 BA 9A 10 76 -- 039B40
89 85 C6 0C 5E 8E 0A 7E 03 F8 8B 2A 0E 46 6B 11 -- 039B50
8B 0A 7E C5 00 00 10 C8 57 56 CB 5E 5F C9 01 00 -- 039B60
55 8B 4E 45 8B F2 56 89 F0 46 89 40 55 8B 3E 45 -- 039B70
00 5E 05 0A 46 8B 0C 76 FF F6 56 89 F4 46 89 50 -- 039B80
03 08 C4 83 00 5C EE E8 9A 56 75 FF 58 75 FF 50 -- 039B90
56 89 F8 46 89 F2 56 13 F0 46 03 F6 56 13 F4 46 -- 039BA0
08 C4 83 00 5C EF 6E 9A 50 52 02 00 68 00 6A FA -- 039BB0
6B FE 56 89 FC 46 89 FA E2 D2 D1 E0 D1 00 09 B9 -- 039BC0
56 8B F8 46 8B 0C 5E 8E 0A 7E 03 F8 8B 2A 0E 46 -- 039BD0
8B 00 8C 95 89 00 8A 85 89 FE 56 1B FC 46 2B FA -- 039BE0
7E 03 FB 8B 2A 0E 5E 6B 60 55 8B 5E 45 8B 0A 7E -- 039BF0
46 8B 0A 7E 8B 00 82 95 89 00 80 85 89 0A 01 FE -- 039C00
4E 73 0A 45 3B 53 7F 07 7C 0C 55 3B FE 56 8B FC -- 039C10
80 FE 56 89 FC 46 89 0C 55 8B 0A 45 8B 0A 7E C5 -- 039C20
96 B5 FF 70 75 FF 72 75 FF 57 56 1C 75 01 25 7D -- 039C30
EB 5E 5F 00 5C FE EC 9A 02 00 68 00 94 B5 FF 00 -- 039C40
88 85 C6 0C 5E 8E 0A 7E 03 F8 8B 2A 0E 46 6B 11 -- 039C50

7E C5 37 EB 10 7E C5 00 00 05 C7 14 7E C5 01 00 -- 039C60
5E 8E 0A 7E 03 F8 8B 2A 0E 46 6B 00 00 05 C7 10 -- 039C70
3B FE 56 8B FC 46 8B 0A 7E 8B 00 00 88 85 C6 0C -- 039C80
00 00 05 C7 14 7E C5 09 75 0A 45 3B 0E 75 0C 55 -- 039C90
C9 FE 56 8B FC 46 8B 00 01 05 C7 14 7E C5 07 EB -- 039CA0
8B 56 45 8B 0A 7E C5 00 00 2A C8 57 56 CB 5E 5F -- 039CB0
7E 03 F8 8B 2A 0E 46 6B F2 56 89 F0 46 89 58 55 -- 039CC0
8B FC 56 89 FA 46 89 00 82 95 8B 00 80 85 8B 0A -- 039CD0
46 6B E0 56 89 DE 46 89 50 55 8B 4E 45 8B 0A 7E -- 039CE0
2B 26 D2 2B 3C 45 8B 0C 46 8E F7 03 F0 8B 2A 0E -- 039CF0
46 89 E0 56 13 DE 46 03 00 8C 94 1B 26 00 8A 84 -- 039D00
46 3B 00 A3 E9 03 7D 0D 7F F2 56 3B F8 56 89 F6 -- 039D10
76 FF F8 76 FF 50 F0 46 8D 16 00 9B E9 03 77 F0 -- 039D20
2D FC 56 13 FA 46 03 08 C4 83 00 5C EF 74 9A F6 -- 039D30
50 F0 46 8D 16 FC 56 89 FA 46 89 00 DA 83 00 01 -- 039D40
```

261

```
46 89 08 C4 83 00 5C EE D6 9A F6 76 FF F8 76 FF -- 039D50
54 55 1B 52 45 2B F2 56 8B F0 46 8B 0A 7E C5 F4 -- 039D60
07 77 E0 56 3B D2 2B F4 46 8B E0 56 89 DE 46 89 -- 039D70
C4 00 FC 56 83 01 FA 46 83 28 72 DE 46 3B 2D 72 -- 039D80
03 D2 2B C7 8B F4 7E 2B 3C 7C 8B 0A 76 C5 0A 5E -- 039D90
C4 48 EB 54 57 1B 26 52 47 2B 26 F2 56 13 F0 46 -- 039DA0
EB D2 2B C7 8B F4 7E 2B 3C 7C 8B 0A 76 C5 0A 5E -- 039DB0
E0 56 89 DE 46 89 54 55 8B 52 45 8B 0A 7E C5 E4 -- 039DC0
8B 00 8A 85 8B FE 03 F8 8B 2A 0E 46 6B 0A 76 C4 -- 039DD0
56 13 F0 46 03 50 54 1B 26 4E 44 2B 26 00 8C 95 -- 039DE0
FA 46 8B 0A 7E C5 FE 46 89 E0 56 1B DE 46 2B F2 -- 039DF0
3B 00 8D E9 03 7D 0D 7F 36 55 3B FC 56 8B 01 FE -- 039E00
36 55 8B 34 45 8B 0A 7E C5 00 85 E9 03 73 34 45 -- 039E10
8B 4E 45 8B FC 56 89 FA 46 89 00 DA 83 00 01 2D -- 039E20
46 89 54 55 8B 52 45 8B D8 56 89 D6 46 89 50 55 -- 039E30
8A 85 8B 0A 7E 03 F8 8B 2A 0E 46 6B DC 56 89 DA -- 039E40
50 F0 46 8D 16 E0 56 89 DE 46 89 00 8C 95 8B 00 -- 039E50
2B FC 56 8B FA 46 8B 0A 7E 03 F8 8B 2A 0E 46 6B -- 039E60
9A 50 52 00 D2 83 00 01 05 00 82 95 1B 00 80 85 -- 039E70
DA 46 2B E0 56 13 DE 46 03 08 C4 83 00 5C EE E2 -- 039E80
FF FE 46 F7 FE 46 89 D8 56 1B D6 46 2B DC 56 1B -- 039E90
8B 00 00 E2 46 C7 05 EB 00 01 E2 46 C7 07 74 01 -- 039EA0
74 00 E2 7E 83 FE 46 89 09 E0 C1 09 E8 C1 FE 46 -- 039EB0
8E 0A 7E 03 F8 8B 2A 0E 46 6B 02 00 FE 46 81 05 -- 039EC0
46 8B 0C 46 8E 0A 76 03 F2 8B 2A 0E 56 6B 0C 5E -- 039ED0
00 94 85 89 02 00 2D 72 54 8B 26 70 44 03 26 FE -- 039EE0
6B 02 00 FE 6E 81 05 74 00 14 7E 83 00 96 95 89 -- 039EF0
56 8B FA 46 8B 0C 5E 8E 0A 7E 03 F8 8B 2A 0E 46 -- 039F00
46 03 D2 2B FE 46 8B 00 86 95 89 00 84 85 89 FC -- 039F10
0E 46 6B 0C 55 89 0A 45 89 0A 7E 8B 12 56 13 10 -- 039F20
8E 0A 76 03 F0 8B 2A 0E 46 6B 0A 7E 03 F8 8B 2A -- 039F30
94 1B 26 00 80 84 2B 26 FC 56 8B FA 46 8B 0C 46 -- 039F40
01 FA 46 83 00 8E 85 89 00 D2 83 00 01 05 00 82 -- 039F50
5E 45 89 0A 7E 8B FC 56 8B FA 46 8B 00 FC 56 83 -- 039F60
8B FA 46 8B 0A 7E 03 F8 8B 2A 0E 46 6B 60 55 89 -- 039F70
F8 8B 2A 0E 46 6B 00 92 95 89 00 90 85 89 FC 56 -- 039F80
8B EA 56 89 E8 46 89 76 55 8B 74 45 8B 0A 7E 03 -- 039F90
EB 00 00 05 C7 E8 7E C5 09 74 00 1C 7D 80 0A 7E -- 039FA0
8A 85 8B 0C 5E 8E 0A 7E 03 F8 8B 2A 0E 46 6B 15 -- 039FB0
E9 03 74 00 22 7D 80 0A 7E C5 05 89 E8 7E C5 00 -- 039FC0
89 00 8E 85 8B 0A 7E 03 F8 8B 2A 0E 46 6B 00 8D -- 039FD0
55 8B 2C 45 8B 40 74 00 1C 7D 80 0A 7E 8B E4 46 -- 039FE0
3B E6 46 8B 00 01 E6 46 C7 EE 56 89 EC 46 89 2E -- 039FF0

7E 03 E7 D1 FF C7 83 E6 7E 8B 5B 73 E4 46 01 FE -- 03A000
7E 8B EE 56 13 EC 46 03 D2 2B 05 8B EA 5E 8E E8 -- 03A010
E6 46 C7 D1 EB E6 46 FF 05 89 E8 7E 03 E7 D1 E6 -- 03A020
FF C7 83 E6 7E 8B 27 73 E4 46 3B E6 46 8B 00 01 -- 03A030
13 F0 46 03 D2 2B 05 8B EA 5E 8E E8 7E 03 E7 D1 -- 03A040
EB E6 46 FF 05 89 E8 7E 03 E7 D1 E6 7E 8B F2 56 -- 03A050
46 6B 00 00 1A C8 57 56 CB 5E 5F C9 FE 46 8B D1 -- 03A060
95 8B 00 80 85 8B 0C 5E 8E 0A 7E 03 F8 8B 2A 0E -- 03A070
55 8B 4E 45 8B 0A 7E 8B FC 56 89 FA 46 89 00 82 -- 03A080
8E F7 03 F0 8B 2A 0E 46 6B F0 56 89 EE 46 89 50 -- 03A090
8C 94 1B 26 00 8A 84 2B 26 D2 2B 3C 45 8B 0C 46 -- 03A0A0
58 55 3B F8 56 89 F6 46 89 F0 56 13 EE 46 03 00 -- 03A0B0
05 0A 46 8B 0C 76 FF 78 76 56 45 3B 7D 72 07 77 -- 03A0C0
C4 83 00 5C EF 7A 9A F6 76 FF F8 76 FF 50 00 56 -- 03A0D0
FA 46 89 00 DA 83 00 01 2D FC 56 13 FA 46 03 08 -- 03A0E0
F8 76 FF 50 00 56 05 0A 46 8B 0C 76 FF FC 56 89 -- 03A0F0
```

```
76 C4 F4 46 89 08 C4 83 00 5C EF C6 9A F6 76 FF -- 03A100
1B 26 52 44 2B 26 58 55 8B 56 45 8B 0A 7E C5 0A -- 03A110
F0 56 3B D2 2B F4 46 8B F0 56 89 EE 46 89 54 54 -- 03A120
FC 56 83 01 FA 46 83 08 72 EE 46 3B 0D 72 07 77 -- 03A130
7C 07 7F 36 55 3B FC 56 8B FA 46 8B 0A 7E C5 00 -- 03A140
2D 36 55 8B 34 45 8B 0A 7E C5 15 72 34 45 3B 1A -- 03A150
76 FF FC 76 FF FC 56 89 FA 46 89 00 DA 83 00 01 -- 03A160
83 00 2C 92 F6 9A 0A 76 FF 0C 76 FF 0E 76 FF FA -- 03A170
55 8B 4E 45 8B 0A 7E C5 FC 56 89 FA 46 89 0A C4 -- 03A180
EA 46 89 54 55 8B 52 45 8B E8 56 89 E6 46 89 50 -- 03A190
00 8A 85 8B 0A 7E 03 F8 8B 2A 0E 46 6B EC 56 89 -- 03A1A0
0A 46 8B 0C 76 FF F0 56 89 EE 46 89 00 8C 95 8B -- 03A1B0
FA 46 8B 0A 7E 03 F8 8B 2A 0E 46 6B 50 00 56 05 -- 03A1C0
D2 83 00 01 05 00 82 95 1B 00 80 85 2B FC 56 8B -- 03A1D0
56 13 EE 46 03 08 C4 83 00 5C EE E8 9A 50 52 00 -- 03A1E0
FE 46 89 E8 56 1B E6 46 2B EC 56 1B EA 46 2B F0 -- 03A1F0
46 8B 0C 5E 8E 0A 7E 03 F8 8B 2A 0E 46 6B 01 FE -- 03A200
FF FE 46 F7 00 86 95 89 00 84 85 89 FC 56 8B FA -- 03A210
8B 00 00 F2 46 C7 05 EB 00 01 F2 46 C7 07 74 01 -- 03A220
74 00 F2 7E 83 FE 46 89 09 E0 C1 09 E8 C1 FE 46 -- 03A230
8E 0A 7E 03 F8 8B 2A 0E 46 6B 02 00 FE 46 81 05 -- 03A240
46 8B 0C 46 8E 0A 76 03 F2 8B 2A 0E 56 6B 0C 5E -- 03A250
00 94 85 89 02 00 2D 72 54 8B 26 70 44 03 26 FE -- 03A260
8B 02 00 FE 6E 81 05 74 00 14 7E 83 00 96 95 89 -- 03A270
0A 45 89 0A 7E C5 12 56 13 10 46 03 D2 2B FE 46 -- 03A280
00 00 34 C8 57 56 CB 5E 5F C9 FE 46 8B 0C 55 89 -- 03A290
6B F6 56 89 F4 46 89 60 55 8B 5E 45 8B 0A 7E C5 -- 03A2A0
46 89 7A 55 8B 78 45 8B 0A 7E 03 F8 8B 2A 0E 46 -- 03A2B0
6B EE 46 89 E4 2A 22 45 8A 0A 7E 8B F2 56 89 F0 -- 03A2C0
00 8C 95 8B 00 8A 85 8B 0A 7E 03 F8 8B 2A 0E 46 -- 03A2D0
46 89 E4 2A 1C 45 8A 0A 7E 8B EA 56 89 E8 46 89 -- 03A2E0
95 8B 00 80 85 8B 0A 7E 03 F8 8B 2A 0E 46 6B EC -- 03A2F0
7E 83 19 74 00 EE 7E 83 FE 56 89 FC 46 89 00 82 -- 03A300
E8 46 8B 25 EB 00 00 05 C7 F0 7E C5 09 75 01 EC -- 03A310
58 55 8B 56 45 8B 0A 7E C5 1B EB 05 89 F0 7E C5 -- 03A320
89 D4 46 89 2E 55 8B 2C 45 8B DA 56 89 D8 46 89 -- 03A330
45 8B 01 67 E9 03 75 00 20 7D 80 0A 7E C5 D6 56 -- 03A340
CE 46 89 6C 45 8B D0 46 89 6A 45 8B D2 46 89 68 -- 03A350
F6 56 8B F4 46 8B 00 00 E6 46 C7 00 00 DC 46 C7 -- 03A360
E9 03 73 FC 46 3B 01 1C E9 03 7D 0D 7F FE 56 3B -- 03A370
E9 03 7E 0D 7C 12 56 3B F6 56 8B F4 46 8B 01 14 -- 03A380
03 74 00 EE 7E 83 00 FC E9 03 76 10 46 3B 01 04 -- 03A390

02 85 8B F0 7E C5 4B 75 01 80 E6 7E 81 00 A6 E9 -- 03A3A0
64 4E A1 9A 01 6A 03 04 68 28 75 03 00 85 0B 03 -- 03A3B0
C5 03 02 95 89 03 00 85 89 F0 7E C5 04 C4 83 00 -- 03A3C0
C5 00 00 03 02 85 C7 00 00 03 00 85 C7 03 00 BD -- 03A3D0
F2 56 89 F0 46 89 03 02 95 8B 03 00 85 8B F0 7E -- 03A3E0
50 D4 46 8D 16 1D 74 00 EC 7E 83 00 00 E6 46 C7 -- 03A3F0
50 52 FE 56 1B FC 46 2B F6 56 8B F4 46 8B 01 FE -- 03A400
8B 50 D8 46 8D 16 21 EB 08 C4 83 00 5C EE E2 9A -- 03A410
EE E2 9A 50 52 FE 56 1B FC 46 2B F6 56 8B F4 46 -- 03A420
E7 D1 E6 7E 8B EA 56 13 E8 46 03 08 C4 83 00 5C -- 03A430
56 8B F4 46 8B E6 46 FF 05 89 F2 5E 8E F0 7E 03 -- 03A440
D0 46 8B CC 46 89 CE 46 8B FA 56 89 F8 46 89 F6 -- 03A450
46 8B 13 76 CE 46 3B CC 46 8B CE 46 89 CE 46 03 -- 03A460
EB 00 D2 83 00 01 05 F6 56 13 F4 46 03 D2 2B D2 -- 03A470
89 F4 46 89 F6 56 13 F4 46 03 D2 2B D2 46 8B 0B -- 03A480
7E 03 F8 8B 2A 0E 46 6B FE D4 E9 DC 46 FF F6 56 -- 03A490
7E 8B CE 46 8B 00 98 85 89 CE 46 8B 0C 5E 8E 0A -- 03A4A0
```

263

```
44  55  8B  42  45  8B  0A  7E  C5  01  3E  E9  6C  45  89  0A  --  03A4B0
89  46  45  8B  E0  46  89  38  45  8B  E4  56  89  E2  46  89  --  03A4C0
8B  F4  46  8B  00  00  E6  46  C7  00  00  DC  46  C7  DE  46  --  03A4D0
73  FC  46  3B  01  00  E9  03  7D  0D  7F  FE  56  3B  F6  56  --  03A4E0
7E  0D  7C  12  56  3B  F6  56  8B  F4  46  8B  00  F8  E9  03  --  03A4F0
00  EE  7E  83  00  E0  E9  03  76  10  46  3B  00  E8  E9  03  --  03A500
8B  F0  7E  C5  4B  75  01  80  E6  7E  81  00  A6  E9  03  74  --  03A510
A1  9A  01  6A  03  04  68  28  75  03  00  85  0B  03  02  85  --  03A520
02  95  89  03  00  85  89  F0  7E  C5  04  C4  83  00  64  4E  --  03A530
00  03  02  85  C7  00  00  03  00  85  C7  03  00  BD  C5  03  --  03A540
89  F0  46  89  03  02  95  8B  03  00  85  8B  F0  7E  C5  00  --  03A550
46  8D  16  1D  75  01  EC  7E  83  00  00  E6  46  C7  F2  56  --  03A560
50  52  FE  56  1B  FC  46  2B  F6  56  8B  F4  46  8B  50  D4  --  03A570
8B  50  D8  46  8D  16  21  EB  08  C4  83  00  5C  EE  E2  9A  --  03A580
EE  E2  9A  50  52  FE  56  1B  FC  46  2B  F6  56  8B  F4  46  --  03A590
E7  D1  E6  7E  8B  EA  56  13  E8  46  03  08  C4  83  00  5C  --  03A5A0
56  8B  F4  46  8B  E6  46  FF  05  89  F2  5E  8E  F0  7E  03  --  03A5B0
8E  E2  7E  03  E7  D1  E0  7E  8B  FA  56  89  F8  46  89  F6  --  03A5C0
99  40  E0  46  8B  F6  56  11  F4  46  01  99  05  8B  E4  5E  --  03A5D0
C5  E0  46  8B  FE  F0  E9  DC  46  FF  E0  56  89  DE  7E  F7  --  03A5E0
45  89  0A  7E  C5  F6  56  8B  F4  46  8B  38  45  89  0A  7E  --  03A5F0
8B  0A  7E  03  F8  8B  2A  0E  46  6B  60  55  89  5E  01  FE  --  03A600
0E  46  6B  00  92  95  89  00  90  85  89  F6  56  8B  F4  46  --  03A610
F8  46  8B  00  8E  85  89  DC  46  8B  0A  7E  03  F8  8B  2A  --  03A620
8B  0A  7E  C5  EC  8B  55  57  56  CB  5E  5F  C9  FA  56  8B  --  03A630
1C  76  FF  22  76  FF  24  76  FF  05  89  1E  7E  C5  6E  45  --  03A640
FF  12  76  FF  14  76  FF  16  76  FF  18  76  FF  1A  76  FF  --  03A650
00  2C  96  CF  9A  0A  76  FF  0C  76  FF  0E  76  FF  10  76  --  03A660
1E  7E  C5  00  00  42  C8  57  56  CB  5E  5F  C9  18  C4  83  --  03A670
8B  FC  46  89  E4  2A  26  45  8A  0A  7E  C5  00  00  05  C7  --  03A680
07  7C  36  55  3B  D6  56  89  D4  46  89  5C  55  8B  5A  45  --  03A690
1E  7E  C5  0A  79  00  D6  7E  83  06  73  34  45  3B  0B  7F  --  03A6A0
0A  7E  03  FB  8B  2A  FC  5E  6B  07  B2  E9  10  72  05  C7  --  03A6B0
7C  08  7F  00  82  95  3B  D6  56  8B  D4  46  8B  0C  5E  8E  --  03A6C0
0A  7E  03  FB  8B  2A  FC  5E  6B  26  72  00  80  85  3B  2C  --  03A6D0
7D  0E  7F  00  86  95  3B  D6  56  8B  D4  46  8B  0C  5E  8E  --  03A6E0
0A  7E  C5  00  EF  E9  03  77  00  84  85  3B  00  F8  E9  03  --  03A6F0
BE  7E  F7  99  40  FC  46  8B  BE  46  89  E4  2A  25  45  8A  --  03A700
00  88  BD  80  0A  7E  03  F8  8B  2A  CE  46  6B  CE  56  89  --  03A710
46  6B  57  56  24  75  00  2A  7D  80  0A  7E  8B  5C  74  00  --  03A720
FC  46  6B  70  75  FF  72  75  FF  0A  7E  03  F8  8B  2A  CE  --  03A730

25  EB  00  94  B5  FF  00  96  B5  FF  0A  7E  03  F8  8B  2A  --  03A740
B5  FF  0C  5E  8E  0A  7E  03  F8  8B  2A  CE  46  6B  57  56  --  03A750
FF  0A  7E  03  F8  8B  2A  FC  46  6B  00  94  B5  FF  00  96  --  03A760
C4  5E  5F  00  5C  FE  EC  9A  02  00  68  70  75  FF  72  75  --  03A770
7C  36  54  3B  26  60  55  8B  5E  45  8B  0A  7E  C5  0A  76  --  03A780
00  60  7D  83  0A  7E  C5  45  73  34  44  3B  26  4B  7F  08  --  03A790
76  FF  1E  76  FF  20  76  FF  14  75  00  2A  7D  80  3C  78  --  03A7A0
FF  20  76  FF  14  EB  00  2C  8A  3F  9A  57  0C  76  FF  FC  --  03A7B0
00  2C  7B  B9  9A  0A  76  FF  0C  76  FF  FC  76  FF  1E  76  --  03A7C0
46  8B  06  8B  E9  03  74  00  3D  83  1E  7E  C5  0A  C4  83  --  03A7D0
80  0A  7E  C5  FC  46  89  E4  2A  26  45  88  0A  7E  C5  CE  --  03A7E0
76  FF  10  76  FF  1E  76  FF  20  76  FF  53  74  00  23  7D  --  03A7F0
83  00  2C  9E  C5  9A  57  0C  76  FF  FC  76  FF  0E  01  FE  --  03A800
0A  7E  C5  06  4E  E9  03  74  00  3D  83  1E  7E  C5  0E  C4  --  03A810
C5  0A  7E  03  F8  8B  2A  FC  46  6B  13  74  00  24  7D  80  --  03A820
03  F8  8B  2A  FC  46  6B  05  B1  E9  00  00  05  C7  74  7D  --  03A830
F8  8B  2A  FC  46  6B  E8  EB  78  7D  C5  0C  5E  8E  0A  7E  --  03A840
8B  57  56  42  75  01  00  89  BD  80  0C  5E  8E  0A  7E  03  --  03A850
```

264

EP 0 533 348 A2

```
75 FF 0A 7E 03 F8 8B 2A FC 46 6B 04 75 FF 0A 7E -- 03A860
5E 5F 00 5C C1 FA 9A 1E 76 FF 20 76 FF FF 6A 7E -- 03A870
46 6B 05 DD E9 03 74 00 3D 83 1E 7E C5 FA 46 89 -- 03A880
C5 00 00 89 85 C6 0C 5E 8E 0A 7E 03 F8 8B 2A FC -- 03A890
E4 2A 1E 45 8A 05 25 E9 03 74 01 1C 7D 80 0A 7E -- 03A8A0
00 8A 85 8B 0A 7E 03 F8 8B 2A FC 46 6B F6 46 89 -- 03A8B0
03 F6 46 8B DA 46 89 12 45 8B 0A 7E 8B F8 46 89 -- 03A8C0
28 45 8A C4 46 89 E4 2A 1F 45 8A DC 46 89 DA 46 -- 03A8D0
FF 3D 4A 45 8B 56 74 00 4A 7D 83 C0 46 89 E4 2A -- 03A8E0
C7 CC 46 89 06 45 8B C6 46 89 48 45 8B 4E 74 FF -- 03A8F0
83 00 00 C2 46 C7 D8 46 89 F8 46 8B 00 01 CA 46 -- 03A900
14 74 CC 46 23 CA 46 8B 00 A5 E9 03 75 04 C2 7E -- 03A910
46 8B EE 46 89 D8 46 8B 06 74 C6 46 23 CA 46 8B -- 03A920
EB CA 46 89 E0 D1 CA 46 8B C2 46 FF D8 46 01 DC -- 03A930
0A 7E C5 4F 74 04 C4 7E 83 76 75 00 C0 7E 83 CE -- 03A940
01 CA 46 C7 CC 46 89 06 45 8B C8 46 89 08 45 8B -- 03A950
04 C2 7E 83 00 00 C2 46 C7 D8 46 89 F8 46 8B 00 -- 03A960
03 E7 D1 C2 7E 8B 15 74 CC 46 23 CA 46 8B 4B 74 -- 03A970
FF D8 46 01 DC 46 8B EE 45 89 D8 46 8B 1F 16 FD -- 03A980
89 F8 46 8B D0 EB CA 46 89 E0 D1 CA 46 8B C2 46 -- 03A990
46 03 DC 46 8B F0 46 89 F8 46 03 DC 46 8B EE 46 -- 03A9A0
FC 46 6B F4 46 89 F2 46 03 DC 46 8B F2 46 89 F0 -- 03A9B0
89 72 55 8B 70 45 8B 0C 5E 8E 0A 7E 03 F8 8B 2A -- 03A9C0
46 89 32 55 8B 30 45 8B 0A 7E 8B E8 56 89 E6 46 -- 03A9D0
44 2B 26 14 55 8B 12 45 8B 0A 76 C4 EC 56 89 EA -- 03A9E0
FC 46 6B 00 00 E2 46 C7 E4 46 89 50 54 1B 26 4E -- 03A9F0
0A 7E 03 F8 8B 2A FC 46 6B F7 03 F0 8B 2A 01 FE -- 03AA00
94 1B 26 00 80 84 2B 26 00 86 95 8B 00 84 85 8B -- 03AA10
46 8B 0A 7E 8B 11 75 00 E0 7E 83 E0 46 89 00 82 -- 03AA20
83 0A 7E C5 E4 46 89 54 55 1B 52 45 2B D2 2B E4 -- 03AA30
46 8D 16 23 74 FF FF 3D 4A 45 8B 2B 74 00 4A 7D -- 03AA40
E6 76 FF E8 76 FF E4 76 FF 50 E2 46 8D 16 50 EE -- 03AA50
71 EB 12 C4 83 00 64 55 74 9A EA 76 FF EC 76 FF -- 03AA60
50 E2 46 8D 16 50 EE 46 8D 16 20 75 04 C4 7E 83 -- 03AA70
9A EA 76 FF EC 76 FF E6 76 FF E8 76 FF E4 76 FF -- 03AA80
16 F8 76 FF 21 74 00 C0 7E 83 D5 EB 00 64 51 FA -- 03AA90
EC 76 FF E6 76 FF E8 76 FF E4 76 FF 50 E2 46 8D -- 03AAA0
C8 76 FF 24 EB 10 C4 83 00 64 56 86 9A EA 76 FF -- 03AAB0
E8 76 FF E4 76 FF 50 E2 46 8D 16 50 EE 46 8D 16 -- 03AAC0
C4 83 00 64 4D A2 9A EA 76 FF EC 76 FF E6 76 FF -- 03AAD0

F8 46 03 F6 46 8B F8 8B DC 6E F7 48 C4 46 8B 14 -- 03AAE0
74 00 4A 7D 83 0A 7E C5 F8 46 89 C7 03 E4 46 03 -- 03AAF0
46 8B 00 01 CA 46 C7 42 74 FF FF 3D 4A 45 8B 4A -- 03AB00
E9 03 75 04 C2 7E 83 00 00 C2 46 C7 D8 46 89 F8 -- 03AB10
C6 46 23 CA 46 8B 14 74 CC 46 23 CA 46 8B 00 98 -- 03AB20
46 FF D8 46 01 DC 46 8B EE 46 89 D8 46 8B 06 74 -- 03AB30
75 00 C0 7E 83 CE EB CA 46 89 E0 D1 CA 46 8B C2 -- 03AB40
DC 46 8B EE 46 89 F8 46 8B 23 75 04 C4 7E 83 69 -- 03AB50
8B F2 46 89 F0 46 03 DC 46 8B F0 46 89 F8 46 03 -- 03AB60
8B 00 01 CA 46 C7 40 EB F4 46 89 F2 46 03 DC 46 -- 03AB70
2A 74 04 C2 7E 83 00 00 C2 46 C7 D8 46 89 F8 46 -- 03AB80
16 FD 03 E7 D1 C2 7E 8B 15 74 CC 46 23 CA 46 8B -- 03AB90
C2 46 FF D8 46 01 DC 46 8B EE 45 89 D8 46 8B 1F -- 03ABA0
03 75 00 E0 7E 83 D0 EB CA 46 89 E0 D1 CA 46 8B -- 03ABB0
8B 0A 7E C5 01 45 E9 03 75 01 E0 7E 83 02 07 E9 -- 03ABC0
74 00 4A 7D 83 D2 56 89 D0 46 89 58 55 8B 56 45 -- 03ABD0
00 DE 46 C7 E0 4E FF 47 74 FF FF 3D 4A 45 8B 4F -- 03ABE0
EE 46 8D 16 01 15 E9 03 75 E0 46 3B DE 46 8B 00 -- 03ABF0
76 FF E8 76 FF DA 76 FF 50 E2 46 8D 16 50 01 FE -- 03AC00
```

265

```
8B 12 C4 83 00 64 55 74 9A EA 76 FF EC 76 FF E6 -- 03AC10
DE 46 FF EE 46 89 D2 56 13 D0 46 03 D2 2B EE 46 -- 03AC20
00 00 DE 46 C7 E0 4E FF 3D 74 00 C0 7E 83 C1 EB -- 03AC30
8D 16 F8 76 FF 00 C8 E9 03 75 E0 46 3B DE 46 8B -- 03AC40
FF EC 76 FF E6 76 FF E8 76 FF DA 76 FF 50 E2 46 -- 03AC50
F8 46 01 D0 46 8B 10 C4 83 00 64 56 86 9A EA 76 -- 03AC60
DE 46 8B 00 00 DE 46 C7 E0 4E FF CB EB DE 46 FF -- 03AC70
8D 16 23 75 04 C4 7E 83 00 8B E9 03 75 E0 46 3B -- 03AC80
76 FF E8 76 FF DA 76 FF 50 E2 46 8D 16 50 EE 46 -- 03AC90
EB 12 C4 83 00 64 51 FA 9A EA 76 FF EC 76 FF E6 -- 03ACA0
76 FF 50 E2 46 8D 16 50 EE 46 8D 16 C8 76 FF 24 -- 03ACB0
4D A2 9A EA 76 FF EC 76 FF E6 76 FF E8 76 FF DA -- 03ACC0
D2 56 13 D0 46 03 D2 2B EE 46 8B 14 C4 83 00 64 -- 03ACD0
46 89 D2 56 13 D0 46 03 D2 2B F0 46 8B EE 46 89 -- 03ACE0
8B F2 46 89 D2 56 13 D0 46 03 D2 2B F2 46 8B F0 -- 03ACF0
DE 46 FF F4 46 89 D2 56 13 D0 46 03 D2 2B F4 46 -- 03AD00
26 14 55 8B 12 45 8B 0A 7E C5 0A 76 C4 FF 6A E9 -- 03AD10
2B 74 00 4A 7D 83 FE 46 89 54 54 1B 26 52 44 2B -- 03AD20
46 8D 16 50 EE 46 8D 16 23 74 FF FF 3D 4A 45 8B -- 03AD30
76 FF EC 76 FF E6 76 FF E8 76 FF FE 76 FF 50 E2 -- 03AD40
75 04 C4 7E 83 71 EB 12 C4 83 00 64 55 74 9A EA -- 03AD50
76 FF FE 76 FF 50 E2 46 8D 16 50 EE 46 8D 16 20 -- 03AD60
EB 00 64 51 FA 9A EA 76 FF EC 76 FF E6 76 FF E8 -- 03AD70
FF 50 E2 46 8D 16 F8 76 FF 21 74 00 C0 7E 83 D5 -- 03AD80
86 9A EA 76 FF EC 76 FF E6 76 FF E8 76 FF FE 76 -- 03AD90
50 EE 46 8D 16 C8 76 FF 24 EB 10 C4 83 00 64 56 -- 03ADA0
76 FF E6 76 FF E8 76 FF FE 76 FF 50 E2 46 8D 16 -- 03ADB0
8B EA 46 8B 14 C4 83 00 64 4D A2 9A EA 76 FF EC -- 03ADC0
0C 5E 8E 0A 7E 03 F8 8B 2A FC 46 6B 12 EB EC 56 -- 03ADD0
46 6B 02 55 89 05 89 0E 7E C5 72 55 8B 70 45 8B -- 03ADE0
95 8B 00 90 85 8B 0C 5E 8E 0A 7E 03 F8 8B 2A FC -- 03ADF0
1A 7E C5 5C 55 89 5A 45 89 0A 7E 8B 00 92 01 FE -- 03AE00
5E 8E 0A 7E 03 F8 8B 2A FC 46 6B 02 55 89 05 89 -- 03AE10
F8 8B 2A FC 46 6B 05 89 12 7E C5 00 8E 85 8B 0C -- 03AE20
6E 45 89 0A 7E 8B 00 98 85 8B 0C 5E 8E 0A 7E 03 -- 03AE30
8B 0A 7E 03 F8 8B 2A FC 46 6B 11 74 00 24 7D 80 -- 03AE40
0A 7E 03 F8 8B 2A FC 46 6B 12 EB 76 55 8B 74 45 -- 03AE50
55 89 05 89 16 7E C5 7A 55 8B 78 45 8B 0C 5E 8E -- 03AE60
7E C5 0A 76 C4 00 00 36 C8 57 56 CB 5E 5F C9 02 -- 03AE70

89 14 54 13 26 12 44 03 26 99 E4 2A 1E 45 8A 0A -- 03AE80
72 55 8B 70 45 8B FE 03 F8 8B 2A 0E 46 6B E8 46 -- 03AE90
89 32 55 8B 30 45 8B 0A 7E 8B F0 56 89 EE 46 89 -- 03AEA0
55 8B 30 45 8B EC 46 89 4C 45 8B F4 56 89 F2 46 -- 03AEB0
1F 45 8A DE 46 89 16 45 8B E6 56 89 E4 46 89 32 -- 03AEC0
46 89 08 45 8B D4 46 89 06 45 8B CE 46 89 E4 2A -- 03AED0
6B 10 74 00 24 7D 80 CA 46 89 E4 2A 28 45 8A D0 -- 03AEE0
6B 18 EB 76 55 8B 74 45 8B FE 03 F8 8B 2A 0E 46 -- 03AEF0
55 8B 78 45 8B 0C 5E 8E 0A 7E 03 F8 8B 2A 0E 46 -- 03AF00
0E 46 6B E2 56 89 E0 46 89 DA 56 89 D8 46 89 7A -- 03AF10
DC 46 89 00 8E 85 8B 0C 5E 8E 0A 7E 03 F8 8B 2A -- 03AF20
42 75 01 00 89 BD 80 0A 7E 03 F8 8B 2A 0E 46 6B -- 03AF30
7E 03 F8 8B 2A 0E 46 6B 04 75 FF 0A 7E 8B 57 56 -- 03AF40
5C C1 FA 9A 14 76 FF 16 76 FF FF 6A 7E 75 FF 0A -- 03AF50
32 E9 03 74 00 3D 83 14 7E C5 FE 46 89 5E 5F 00 -- 03AF60
89 85 C6 0C 5E 8E 0A 7E 03 F8 8B 2A 0E 46 6B 01 -- 03AF70
E9 03 75 DC 46 3B EA 46 8B 00 00 EA 46 C7 00 00 -- 03AF80
74 00 CA 7E 83 00 A2 E9 03 75 04 CE 7E 83 00 FD -- 03AF90
8D 16 35 FF E2 5E 8E E0 7E 03 E7 D1 EA 7E 8B 2C -- 03AFA0
FF F4 76 FF EE 76 FF F0 76 FF DE 76 FF 50 EC 46 -- 03AFB0
```

```
D2 46 C7 00 BC E9 10 C4 83 00 64 56 2E 9A F2 76 -- 03AFC0
89 05 8B E2 5E 8E E0 7E 03 E7 D1 EA 7E 8B 00 01 -- 03AFD0
D2 46 8B 2A 74 04 CC 7E 83 00 00 CC 46 C7 D6 46 -- 03AFE0
46 8B 1F 16 FD 03 E7 D1 CC 7E 8B 15 74 D4 46 23 -- 03AFF0
8B CC 46 FF D6 46 01 E8 46 8B F6 45 89 D6 01 FE -- 03B000
F6 46 8D 16 D0 76 FF D0 EB D2 46 89 E0 D1 D2 46 -- 03B010
FF EE 76 FF F0 76 FF DE 76 FF 50 EC 46 8D 16 50 -- 03B020
8B 4C EB 14 C4 83 00 64 4C 3A 9A F2 76 FF F4 76 -- 03B030
8B F6 46 89 05 8B E2 5E 8E E0 7E 03 E7 D1 EA 7E -- 03B040
46 89 F8 46 03 E8 46 8B F8 46 89 F6 46 03 E8 46 -- 03B050
16 50 F6 46 8D 16 FC 46 89 FA 46 03 E8 46 8B FA -- 03B060
F4 76 FF EE 76 FF F0 76 FF DE 76 FF 50 EC 46 8D -- 03B070
F8 E9 EA 46 FF 12 C4 83 00 64 51 70 9A F2 76 FF -- 03B080
10 7E C5 F4 56 8B F2 46 03 4C 45 8B 0A 7E C5 FE -- 03B090
C5 00 00 0A C8 57 56 CB 5E 5F C9 02 55 89 05 89 -- 03B0A0
45 8A 0A 7E C5 00 00 F6 46 C7 00 00 05 C7 0E 7E -- 03B0B0
8B 2A F6 46 6B 01 1F E9 03 77 F6 46 3B E4 2A 25 -- 03B0C0
0A 7E 8B 57 56 2E 75 01 00 89 BD 80 0A 7E 03 F8 -- 03B0D0
6A 7E 75 FF 0A 7E 03 F8 8B 2A F6 46 6B 04 75 FF -- 03B0E0
7E C5 5E 5F 00 5C C1 FA 9A 0E 76 FF 10 76 FF FF -- 03B0F0
8B 2A F6 46 6B 57 56 01 0F E9 03 74 00 3D 83 0E -- 03B100
0E 76 FF 10 76 FF 7C 75 FF 0C 5E 8E 0A 7E 03 F8 -- 03B110
E9 03 74 00 3D 83 0E 7E C5 5E 5F 00 5C BF D8 9A -- 03B120
0C 5E 8E 0A 7E 03 F8 8B 2A F6 46 6B 57 56 00 E6 -- 03B130
5E 5F 00 5C BF 78 9A 0E 76 FF 10 76 FF 7E 75 FF -- 03B140
7D 80 0A 7E C5 00 BD E9 03 74 00 3D 83 0E 7E C5 -- 03B150
76 75 FF 0A 7E 03 F8 8B 2A F6 46 6B 19 74 00 24 -- 03B160
0A 7E C5 67 EB 04 C4 83 00 64 4E E3 9A 74 75 FF -- 03B170
FF 0A 7E 03 F8 8B 2A F6 46 6B 11 74 00 22 7D 80 -- 03B180
0A 7E 03 F8 8B 2A F6 46 6B DC EB 78 75 FF 7A 75 -- 03B190
8B FE 56 89 FC 46 89 7A 55 8B 78 45 8B 0C 5E 8E -- 03B1A0
F8 46 89 FE 56 8B FC 46 8B 2D 74 FC 46 0B FE 46 -- 03B1B0
46 89 03 02 95 8B 03 00 85 8B FC 7E C5 FA 56 89 -- 03B1C0
83 00 64 4E E3 9A F8 76 FF FA 76 FF FE 56 89 FC -- 03B1D0
1C 7D 80 0A 7E C5 FE D1 E9 F6 46 FF CB EB 04 C4 -- 03B1E0
FF 32 75 FF 0A 7E C5 11 75 02 27 7D 80 06 74 01 -- 03B1F0
FF 0C 76 FF 04 C4 83 00 64 4E E3 9A 30 75 01 FE -- 03B200
02 00 CB 5E 5F C9 04 C4 83 00 64 4E E3 9A 0A 76 -- 03B210

00 01 EE 46 C7 00 01 EC 46 C7 00 00 14 C8 57 56 -- 03B220
83 D1 18 3E C5 2E 00 01 F2 46 C7 00 01 F0 46 C7 -- 03B230
1C 3E C5 2E 05 92 E9 00 5C AD 70 9A 08 74 00 3D -- 03B240
C5 2E 05 80 E9 FF FF B8 06 75 00 02 3D 05 8B D1 -- 03B250
9A 08 00 68 00 64 22 15 9A 00 02 05 C7 D1 1C 3E -- 03B260
55 89 05 89 D1 20 3E C5 2E 02 C4 83 00 64 4E 56 -- 03B270
89 04 45 89 06 45 89 D1 24 3E C5 2E 00 01 B8 02 -- 03B280
89 06 45 89 D1 28 3E C5 2E 00 01 B8 05 89 02 45 -- 03B290
2C 36 FF 2E D1 2E 36 FF 2E 05 89 02 45 89 04 45 -- 03B2A0
D1 34 3E C5 2E 06 C4 83 00 64 24 00 9A 01 6A D1 -- 03B2B0
08 3D 05 89 D1 30 3E C5 2E FF FF 05 E4 2A 05 8A -- 03B2C0
3C 3E C5 2E 00 01 05 C7 D1 38 3E C5 2E 09 75 00 -- 03B2D0
00 54 C8 1C 9A 0F 75 02 3D 80 05 74 0A 3D 80 D1 -- 03B2E0
2E D1 46 36 FF 2E 02 C4 83 00 4C 8E 14 9A 00 6A -- 03B2F0
B4 9A D1 40 36 FF 2E D1 42 36 FF 2E D1 44 36 FF -- 03B300
6A 00 00 05 C7 D1 48 3E C5 2E 08 C4 83 00 64 5B -- 03B310
2E D1 54 36 FF 2E D1 56 36 FF 2E 01 6A FF 6A 12 -- 03B320
C4 83 00 5C 93 FD 9A D1 50 36 FF 2E D1 52 36 FF -- 03B330
ED 6E 9A D1 4C 36 FF 2E D1 4E 36 FF 2E 50 52 0C -- 03B340
FF 05 74 00 3D 83 D1 58 3E C5 2E 0A C4 83 00 5C -- 03B350
46 89 02 55 8B 05 8B D1 4C 3E C5 2E 04 72 E9 35 -- 03B360
```

267

```
FF 2E D1 66 36 FF 2E 50 F8 46 8D 16 FE 56 89 FC -- 03B370
36 FF 2E D1 60 36 FF 2E D1 62 36 FF 2E D1 64 36 -- 03B380
00 5C 3E 8A 9A FC 76 FF 52 D1 5C 36 FF 2E D1 5E -- 03B390
4E 36 FF 2E 04 27 E9 03 74 00 F8 7E 83 14 C4 83 -- 03B3A0
46 C7 04 C4 83 00 5C 94 D5 9A D1 4C 36 FF 2E D1 -- 03B3B0
7E 83 00 00 F4 46 C7 4B 7D 04 F6 7E 83 00 00 F6 -- 03B3C0
05 E7 C1 F6 7E 8B 02 E6 C1 F4 76 8B 3B 7D 08 F4 -- 03B3D0
8B 05 D9 9B FE 03 D1 66 1E 8E 2E D1 64 3E 03 2E -- 03B3E0
D1 68 3E 03 2E 05 E7 C1 F6 7E 8B 02 E6 C1 F4 76 -- 03B3F0
EB F4 46 FF 1D D9 9B FE 03 D1 6A 1E 8E 2E 01 FE -- 03B400
7D 04 F6 7E 83 00 00 F6 46 C7 AF EB F6 46 FF BF -- 03B410
D1 6E 06 8E 2E D1 6C 36 03 2E E6 D1 F6 76 8B 63 -- 03B420
74 3E C5 2E 43 74 04 23 26 05 8B D1 5C 3E C5 2E -- 03B430
8B 2E D1 70 06 03 2E 09 E0 C1 F6 46 8B 35 FF D1 -- 03B440
D1 60 06 03 2E 09 E0 C1 F6 46 8B 50 52 D1 72 16 -- 03B450
00 5C F6 28 9A 01 6A 02 6A 50 52 D1 62 16 8B 2E -- 03B460
FF 03 61 E9 03 74 00 F8 7E 83 F8 46 89 0E C4 83 -- 03B470
D1 64 36 FF 2E D1 66 36 FF 2E 01 6A 97 EB F6 46 -- 03B480
83 00 5C 42 50 9A D1 60 36 FF 2E D1 62 36 FF 2E -- 03B490
FF 2E D1 66 36 FF 2E 35 FF D1 5C 3E C5 2E 0A C4 -- 03B4A0
2E 57 56 08 C4 83 00 34 00 00 9A 00 6A D1 64 36 -- 03B4B0
FF 2E D1 72 36 FF 2E D1 78 36 FF 2E D1 7A 36 FF -- 03B4C0
F6 46 C7 5E 5F 00 5C FF 6A 9A 04 00 68 D1 70 36 -- 03B4D0
F4 7E 81 00 00 F4 46 C7 32 7D 04 F6 7E 83 00 00 -- 03B4E0
2E 09 E7 C1 F6 7E 8B E6 D1 F4 76 8B 21 7D 01 00 -- 03B4F0
05 89 F4 46 8B FE 03 D1 7E 1E 8E 2E D1 7C 3E 03 -- 03B500
C7 D1 80 3E C5 2E C8 EB F6 46 FF D8 EB F4 46 FF -- 03B510
E9 03 7C 00 04 3D 05 8B D1 80 3E C5 2E 00 00 05 -- 03B520
D1 6C 3E 03 2E E7 D1 3D 8B D1 84 36 C4 2E 00 92 -- 03B530
2E 02 3D E9 03 75 04 23 26 05 8B D1 6E 1E 8E 2E -- 03B540
3E 03 2E E7 D1 3D 8B D1 80 3E C5 2E D1 5C 36 C4 -- 03B550
1B E9 03 75 04 23 26 05 8B D1 6E 1E 8E 2E D1 6C -- 03B560
35 FF 02 75 FF D1 8C 3E C5 2E 50 F8 46 8D 16 02 -- 03B570
2E D1 78 06 03 2E 09 E0 C1 05 8B D1 80 3E C5 2E -- 03B580
8A D1 88 3E C5 2E 01 6A 35 FF 50 52 D1 7A 16 8B -- 03B590
C4 83 00 64 40 D0 9A 01 45 68 09 6A 50 E4 2A 05 -- 03B5A0
FF D1 80 3E C5 2E 02 1B E9 03 74 00 F8 7E 83 16 -- 03B5B0

19 7F 00 FF FA 7E 81 00 00 FA 46 C7 FF 5F E9 05 -- 03B5C0
8B D1 92 1E 8E 2E D1 90 3E 03 2E E7 D1 FA 7E 8B -- 03B5D0
05 C6 D1 94 3E C5 2E E0 EB FA 46 FF 05 89 FA 46 -- 03B5E0
05 C6 D1 9C 3E C5 2E 00 05 C6 D1 98 3E C5 2E 01 -- 03B5F0
A8 36 DC 2E 9B 05 D9 9B D1 A4 3E C5 2E 00 01 FE -- 03B600
D9 9B D1 B4 3E C5 2E 1D D9 9B D1 A0 3E C5 2E D1 -- 03B610
9A 1D D9 9B D1 B0 3E C5 2E D1 A8 36 DC 2E 9B 05 -- 03B620
C5 2E D1 BC 36 C4 2E 00 2C A8 2F 9A 00 2C A9 1C -- 03B630
9B D1 B8 3E C5 2E 0C D8 26 9B 05 D9 9B D1 A4 3E -- 03B640
C5 2E 0C D8 26 9B 05 D9 9B D1 B4 3E C5 2E 1D D9 -- 03B650
2E 9B 05 D9 9B D1 BC 3E C5 2E 1D D9 9B D1 C0 3E -- 03B660
C8 3E C5 2E 1D D9 9B D1 C4 3E C5 2E D1 A8 0E DC -- 03B670
6A 57 D1 CA 36 FF 2E 50 F8 46 8D 16 06 05 C6 D1 -- 03B680
F8 7E 83 0E C4 83 00 64 40 D0 9A 6E 6A 05 6A 01 -- 03B690
9A 00 0F 05 C7 D1 CC 3E C5 2E 01 31 E9 03 74 00 -- 03B6A0
C5 2E 01 24 E9 03 74 C0 0B F8 46 89 00 2C AA 7A -- .03B6B0
16 16 05 C6 D1 C8 3E C5 2E 00 00 05 C7 D1 CC 3E -- 03B6C0
6E 6A 05 6A 01 6A 57 D1 CA 36 FF 2E 50 F8 46 8D -- 03B6D0
E6 E9 03 74 00 F8 7E 83 0E C4 83 00 64 40 D0 9A -- 03B6E0
3E C5 2E 05 8B D1 D4 3E C5 2E 00 2C CC CD 9A 00 -- 03B6F0
2E 12 7F 0F FA 7E 83 00 00 FA 46 C7 05 88 D1 D0 -- 03B700
EB FA 46 FF 05 88 FA 46 8B FA 7E 03 D1 D8 3E C5 -- 03B710
```

```
56 05 89 D1 DC 3E C5 2E 05 8B D1 5C 3E C5 2E E8 -- 03B720
D1 72 36 FF 2E D1 E0 36 FF 2E D1 E2 36 FF 2E 57 -- 03B730
9A 5E 5F 00 5C FF 6A 9A 04 00 68 D1 70 36 FF 2E -- 03B740
18 7D 01 00 F6 7E 81 00 00 F6 46 C7 00 54 4D FE -- 03B750
C7 D1 E6 1E 8E 2E D1 E4 3E 03 2E E7 D1 F6 7E 8B -- 03B760
00 05 C7 D1 E8 3E C5 2E E1 EB F6 46 FF FF FF 05 -- 03B770
8D 16 54 EB C0 2B 00 00 05 C7 D1 EC 3E C5 2E 00 -- 03B780
3E C5 2E 35 FF 02 75 FF D1 8C 3E C5 2E 50 F8 46 -- 03B790
7E 16 8B 2E D1 7C 06 03 2E 09 E0 C1 05 8B D1 80 -- 03B7A0
E4 2A 05 8A D1 88 3E C5 2E 01 6A 35 FF 50 52 D1 -- 03B7B0
7E 83 16 C4 83 00 64 40 D0 9A 01 45 68 09 6A 50 -- 03B7C0
83 00 2C D0 F8 9A F8 76 FF FD E5 E9 03 75 00 F8 -- 03B7D0
FE 46 C7 00 00 14 C8 57 56 CB 5E 5F C9 9B 02 C4 -- 03B7E0
2E 99 FE 46 8B 00 D4 E9 03 7C 08 FE 7E 83 00 00 -- 03B7F0
2E 02 E7 C1 FC 7E 8B FC 46 89 D1 F0 3E F7 01 FE -- 03B800
C1 FE 7E 8B 05 D9 9B D1 F8 1E 8E 2E D1 F6 3E 03 -- 03B810
2E 1D D9 9B D1 F4 1E 8E 2E D1 F2 3E 03 2E 02 E7 -- 03B820
2E D1 F6 3E 03 2E 02 E7 C1 FC 7E 8B D1 A4 36 C4 -- 03B830
C1 47 FE 7E 8B 04 D8 26 9B 05 D9 9B D1 F8 1E 8E -- 03B840
9B 1D D9 9B D1 F4 1E 8E 2E D1 F2 3E 03 2E 02 E7 -- 03B850
D9 9B D1 B4 3E C5 2E EC 5E DD 9B D2 02 06 DF 2E -- 03B860
2E 02 E7 C1 FC 7E 8B F4 5E DD 9B EC 46 DC 9B 05 -- 03B870
F4 66 DC 9B 05 D9 9B D2 00 1E 8E 2E D1 FE 3E 03 -- 03B880
D1 FC 1E 8E 2E D1 FA 3E 03 2E 02 E7 C1 FE 7E 8B -- 03B890
8E 2E D1 FE 3E 03 2E 02 E7 C1 FC 7E 8B 1D D9 9B -- 03B8A0
3E 03 2E 02 E7 C1 47 FE 7E 8B 05 D9 9B D2 00 1E -- 03B8B0
23 E9 02 FE 46 83 1D D9 9B D1 FC 1E 8E 2E D1 FA -- 03B8C0
00 FC 46 C7 00 00 1C C8 57 56 CB 5E 5F C9 9B FF -- 03B8D0
56 89 F4 46 89 D2 06 16 8B 2E D2 04 06 8B 2E 00 -- 03B8E0
3E C5 2E 3E 7D 01 00 FC 7E 81 00 00 FA 46 C7 F6 -- 03B8F0
83 F4 7E C5 14 7E 00 FF 3D 05 03 FC 46 8B D2 08 -- 03B900
FA 46 FF 00 FF FC 46 C7 05 89 FC 46 8B 02 F4 46 -- 03B910
08 3E C5 2E 05 89 FC 46 8B 02 F4 46 83 F4 7E C5 -- 03B920
2E 48 FA 46 8B BB EB FA 46 FF FC 46 01 05 8B D2 -- 03B930
7C 04 F8 7E 83 00 00 F8 46 C7 05 89 D2 0C 3E C5 -- 03B940
03 7C 01 00 FE 7E 81 00 00 FE 46 C7 00 DB E9 03 -- 03B950

B8 E4 5E D9 9B 05 D9 9B D1 A0 3E C5 2E 00 C6 E9 -- 03B960
D8 9B 02 C4 83 00 5C ED A7 9A 50 FE 46 2B 00 FF -- 03B970
F6 3E 03 2E 02 E7 C1 F8 7E 8B EC 5E DD 9B E4 4E -- 03B980
ED 99 9A EC 46 DC 9B 05 D9 9B D1 F8 1E 8E 2E D1 -- 03B990
8B E6 D1 FE 76 8B 08 C4 83 00 5C ED F9 9A 00 5C -- 03B9A0
03 D2 12 1E 8E 2E D2 10 3E 03 2E 09 E7 C1 F8 7E -- 03B9B0
B8 E4 5E D9 9B 05 D9 9B D1 A0 3E C5 2E 05 89 FE -- 03B9C0
D8 9B 02 C4 83 00 5C ED A7 9A 50 FE 46 2B 00 FF -- 03B9D0
FE 3E 03 2E 02 E7 C1 F8 7E 8B EC 5E DD 9B E4 4E -- 03B9E0
ED 99 9A EC 66 DC 9B 05 D9 9B D2 00 1E 8E 2E D1 -- 03B9F0
D1 FE 76 8B 08 C4 83 00 5C ED F9 9A 00 5C 01 FE -- 03BA00
16 1E 8E 2E D2 14 3E 03 2E 09 E7 C1 F8 7E 8B E6 -- 03BA10
1C E9 F8 46 FF FF 30 E9 FE 46 FF 05 89 FE 03 D2 -- 03BA20
01 F6 46 C7 00 00 14 C8 57 56 CB 5E 5F C9 9B FF -- 03BA30
00 01 FC 46 C7 00 01 FA 46 C7 00 01 F8 46 C7 00 -- 03BA40
C4 2E 00 C9 E9 03 7C 04 FE 7E 83 00 00 FE 46 C7 -- 03BA50
1E 8E 2E D1 6C 3E 03 2E E7 D1 FE 7E 8B D1 5C 36 -- 03BA60
B0 3E C5 2E 00 97 E9 03 75 04 23 26 05 8B D1 6E -- 03BA70
D9 9B D1 A0 3E C5 2E 00 5C ED 99 9A 05 D9 9B D1 -- 03BA80
FE 3E 03 2E 02 E7 C1 FE 7E 8B 00 5C ED 99 9A 05 -- 03BA90
7E 8B 00 5C ED 99 9A 05 D9 9B D2 00 1E 8E 2E D1 -- 03BAA0
D9 9B D1 F8 1E 8E 2E D1 F6 3E 03 2E 02 E7 C1 FE -- 03BAB0
2E D2 24 06 03 2E 14 FE 46 6B 00 5C ED 99 9A 05 -- 03BAC0
```

269

```
2E D2 20 06 03 2E 14 FE 46 6B 50 52 D2 26 16 8B -- 03BAD0
2E D2 1C 06 03 2E 14 FE 46 6B 50 52 D2 22 16 8B -- 03BAE0
2E D2 18 06 03 2E 18 FE 46 6B 50 52 D2 1E 16 8B -- 03BAF0
C4 83 00 34 2A 1D 9A FE 76 FF 50 52 D2 1A 16 8B -- 03BB00
00 F6 45 C7 1F 16 FD 03 E7 D1 FE 7E 8B 0E EB 32 -- 03BB10
1E 16 8B 2E D2 1C 06 8B 2E FF 2E E9 FE 46 FF 00 -- 03BB20
26 16 8B 2E D2 24 06 8B 2E F4 56 89 F2 46 89 D2 -- 03BB30
35 FF D1 5C 3E C5 2E 01 6A F0 56 89 EE 46 89 D2 -- 03BB40
2C BC 24 9A 06 04 68 01 6A 09 6A 50 F6 46 8D 16 -- 03BB50
76 FF F4 76 FF 68 75 C0 0B EC 46 89 0E C4 83 00 -- 03BB60
6A 00 6A 50 F6 46 8D 16 35 FF D1 5C 3E C5 2E F2 -- 03BB70
C0 0B EC 46 89 10 C4 83 00 2C BE 41 9A 00 6A 09 -- 03BB80
16 35 FF D1 5C 3E C5 2E EE 76 FF F0 76 FF 41 75 -- 03BB90
83 00 2C BE 41 9A 01 6A 09 6A 00 6A 50 F6 46 8D -- 03BBA0
50 F6 46 8D 16 00 6A 1A 75 C0 0B EC 46 89 10 C4 -- 03BBB0
75 C0 0B EC 46 89 08 C4 83 00 2C C9 60 9A 09 6A -- 03BBC0
46 C7 00 00 02 C8 57 56 CB 5E 5F C9 9B C0 2B 02 -- 03BBD0
2E 57 56 20 74 00 3D 83 D1 18 3E C5 2E 00 00 FE -- 03BBE0
FF 2E D1 72 36 FF 2E 35 FF 02 75 FF D2 28 3E C5 -- 03BBF0
2E 5E 5F 00 5C FF 6A 9A 04 00 68 D1 70 36 01 FE -- 03BC00
45 8B D1 20 3E C5 2E 27 74 00 3D 83 D2 2C 3E C5 -- 03BC10
83 00 64 4E E3 9A 35 FF 02 75 FF 1B 74 05 0B 02 -- 03BC20
00 00 02 45 C7 00 00 05 C7 D1 20 3E C5 2E 04 C4 -- 03BC30
9A 50 0B 74 00 FE 7E 83 FE 46 89 00 2C AC A1 9A -- 03BC40
56 CB 5E 5F C9 C0 2B 02 EB 02 C4 83 00 2C D0 F8 -- 03BC50
3D 80 D1 3C 3E C5 2E 01 FF 46 C6 00 00 04 C8 57 -- 03BC60
FF 2E 50 E4 2A FF 46 8A 37 75 02 3D 80 05 74 0A -- 03BC70
36 FF 2E D1 52 36 FF 2E D2 30 36 FF 2E D2 32 36 -- 03BC80
FC 7E 83 FC 46 89 0A C4 83 00 5C 94 FB 9A D1 50 -- 03BC90
2E 01 A8 E9 02 C4 83 00 2C D0 F8 9A 50 0C 74 00 -- 03BCA0
FF 2E 57 56 00 C7 E9 03 75 00 3D 83 D1 18 3E C5 -- 03BCB0
36 FF 2E D1 7A 36 FF 2E D1 70 36 FF 2E D1 72 36 -- 03BCC0
80 3E C5 2E 5E 5F 00 5C FF 6A 9A 04 00 68 D1 78 -- 03BCD0
7C 00 04 3D 05 8B D1 80 3E C5 2E 00 00 05 C7 D1 -- 03BCE0
3E 03 2E E7 D1 3D 8B D1 84 36 C4 2E 00 8F E9 03 -- 03BCF0

C4 2E 6B 74 04 23 26 05 8B D1 6E 1E 8E 2E D1 6C -- 03BD00
6C 3E 03 2E E7 D1 3D 8B D1 80 3E C5 2E D1 5C 36 -- 03BD10
46 8D 16 4C 74 04 23 26 05 8B D1 6E 1E 8E 2E D1 -- 03BD20
80 3E C5 2E 35 FF 02 75 FF D1 8C 3E C5 2E 50 FC -- 03BD30
D1 72 16 8B 2E D1 70 06 03 2E 09 E0 C1 05 8B D1 -- 03BD40
50 E4 2A 05 8A D1 88 3E C5 2E 00 6A 35 FF 50 52 -- 03BD50
FC 7E 83 16 C4 83 00 64 40 D0 9A 01 45 68 09 6A -- 03BD60
05 FF D1 80 3E C5 2E FF 2B E9 FC 76 FF 06 74 00 -- 03BD70
FF 1B 74 05 0B 02 45 8B D1 20 3E C5 2E FF 62 E9 -- 03BD80
20 3E C5 2E 04 C4 83 00 64 4E E3 9A 35 FF 02 75 -- 03BD90
8B D2 34 3E C5 2E 00 00 02 45 C7 00 00 05 C7 D1 -- 03BDA0
D1 C8 3E C5 2E 00 54 99 9D 9A 05 75 00 01 3D 05 -- 03BDB0
01 6A 57 D1 CA 36 FF 2E 50 FC 46 8D 16 06 05 C6 -- 03BDC0
00 FC 7E 83 0E C4 83 00 64 40 D0 9A 6E 6A 05 6A -- 03BDD0
E4 2A 05 8A D1 C8 3E C5 2E 50 FC 46 8D 16 91 75 -- 03BDE0
FC 7E 83 0A C4 83 00 64 40 D0 9A 6F 6A 03 6A 50 -- 03BDF0
16 05 C6 D1 C8 3E C5 2E FF 6D E9 03 74 00 01 FE -- 03BE00
6A 05 6A 01 6A 57 D1 CA 36 FF 2E 50 FC 46 8D 16 -- 03BE10
E9 03 74 00 FC 7E 83 0E C4 83 00 64 40 D0 9A 6E -- 03BE20
D1 38 3E C5 2E 00 00 05 C7 D1 1C 3E C5 2E FF 43 -- 03BE30
70 36 FF 2E D1 72 36 FF 2E 12 75 00 01 3D 05 8B -- 03BE40
C8 57 56 CB 5E 5F C9 04 C4 83 00 44 41 09 9A D1 -- 03BE50
5B 06 9A 00 64 23 6E 9A 00 00 FE 46 C7 00 00 02 -- 03BE60
FF 2E D1 70 36 FF 2E D1 72 36 FF 2E 57 56 00 54 -- 03BE70
```

270

```
00 5C FF 6A 9A 04 00 68 D1 78 36 FF 2E D1 7A 36 -- 03BE80
D1 80 3E C5 2E 00 00 05 C7 D1 80 3E C5 2E 5E 5F -- 03BE90
8B D1 84 36 C4 2E 00 97 E9 03 7C 00 04 3D 05 8B -- 03BEA0
26 05 8B D1 6E 1E 8E 2E D1 6C 3E 03 2E E7 D1 3D -- 03BEB0
3D 8B D1 80 3E C5 2E D1 5C 36 C4 2E 73 74 04 23 -- 03BEC0
23 26 05 8B D1 6E 1E 8E 2E D1 6C 3E 03 2E E7 D1 -- 03BED0
02 75 FF D1 8C 3E C5 2E 50 FE 46 8D 16 54 74 04 -- 03BEE0
70 06 03 2E 09 E0 C1 05 8B D1 80 3E C5 2E 35 FF -- 03BEF0
88 3E C5 2E 00 6A 35 FF 50 52 D1 72 16 8B 2E D1 -- 03BF00
00 64 40 D0 9A 01 45 68 09 6A 50 E4 2A 05 8A D1 -- 03BF10
2C D0 F8 9A FE 76 FF 0E 74 00 FE 7E 83 16 C4 83 -- 03BF20
5A E9 05 FF D1 80 3E C5 2E 01 41 E9 02 C4 83 00 -- 03BF30
05 75 02 3D 80 05 74 0A 3D 80 D1 3C 3E C5 2E FF -- 03BF40
3E C5 2E FE 46 89 00 2C AC 1C 9A 00 4C 9A 8E 9A -- 03BF50
83 D2 3C 3E C5 2E 00 EA E9 03 75 00 3D 83 D2 38 -- 03BF60
02 3D 05 8B D2 40 3E C5 2E 00 DD E9 03 75 00 3D -- 03BF70
36 FF 2E 50 FE 46 8D 16 00 44 C1 C3 9A 05 75 00 -- 03BF80
48 36 FF 2E D2 4A 36 FF 2E D1 D8 36 FF 2E D1 DA -- 03BF90
0A 6A 00 6A 02 6A 35 FF D2 44 3E C5 2E 10 6A D2 -- 03BFA0
74 00 FE 7E 83 18 C4 83 00 64 40 D0 9A 01 43 68 -- 03BFB0
8D 16 3C 75 00 3D 83 D2 4C 3E C5 2E FF 65 E9 03 -- 03BFC0
36 FF 2E D1 D8 36 FF 2E D1 DA 36 FF 2E 50 FE 46 -- 03BFD0
35 FF D2 50 3E C5 2E 10 6A D2 54 36 FF 2E D2 56 -- 03BFE0
C4 83 00 64 40 D0 9A 01 43 68 0A 6A 00 6A 02 6A -- 03BFF0
58 3E C5 2E FF 1F E9 03 74 00 FE 7E 83 18 01 FE -- 03C000
04 C4 83 00 44 5A 4B 9A 00 6A 00 6A 02 05 C6 D2 -- 03C010
2E 00 44 C4 57 9A 05 74 00 3D 83 D1 48 3E C5 2E -- 03C020
3D 83 D1 EC 3E C5 2E 0F 74 00 3D 83 D2 5C 3E C5 -- 03C030
00 05 C7 D1 EC 3E C5 2E 00 44 C3 40 9A 05 74 00 -- 03C040
00 54 A0 E0 9A 00 2C D0 CB 9A 00 2C B0 BC 9A 00 -- 03C050
C5 2E 00 01 05 C7 D2 60 3E C5 2E 00 54 47 78 9A -- 03C060
57 56 CB 5E 5F C9 FE 46 8B 00 02 05 C7 D2 64 3E -- 03C070
46 8B D2 68 3E C5 2E 00 00 FE 46 C7 00 00 02 C8 -- 03C080
D2 6C 3E 03 2E 02 E7 C1 FE 7E 8B 3F 7D 05 3B FE -- 03C090

83 00 64 4E E3 9A 35 FF 02 75 FF D2 6E 1E 8E 2E -- 03C0A0
1E 8E 2E D2 70 3E 03 2E F8 8B 06 FE 46 6B 04 C4 -- 03C0B0
FF 04 C4 83 00 64 4E E3 9A 35 FF 02 75 FF D2 72 -- 03C0C0
5E 5F C9 00 00 05 C7 D2 68 3E C5 2E B5 EB FE 46 -- 03C0D0
01 FD 46 C6 00 00 FE 46 C7 00 00 04 C8 57 56 CB -- 03C0E0
3D 80 D1 3C 3E C5 2E 00 00 05 C7 D2 74 3E C5 2E -- 03C0F0
FF 2E 50 E4 2A FD 46 8A 40 75 02 3D 80 05 74 0A -- 03C100
36 FF 2E D1 52 36 FF 2E D2 30 36 FF 2E D2 32 36 -- 03C110
FE 7E 83 FE 46 89 0A C4 83 00 5C 94 FB 9A D1 50 -- 03C120
01 6A 74 EB 02 C4 83 00 2C D0 F8 9A 50 0B 74 00 -- 03C130
00 3D 83 D2 78 3E C5 2E 02 C4 83 00 4C 8E 14 9A -- 03C140
80 3E C5 2E 14 74 00 3D 83 D2 7C 3E C5 2E 1E 74 -- 03C150
02 C4 83 00 54 58 57 9A 32 6A 0A 75 00 3D 83 D2 -- 03C160
83 D2 3C 3E C5 2E 35 74 00 3D 83 D2 38 3E C5 2E -- 03C170
00 6A 04 74 00 3D 83 D1 48 3E C5 2E 2B 74 00 3D -- 03C180
01 6A 11 7E 00 01 3D 05 8B D2 68 3E C5 2E 0E EB -- 03C190
8B 04 C4 83 00 44 B9 D6 9A 35 FF D2 84 3E C5 2E -- 03C1A0
00 44 AA AC 9A EC 8B 55 57 56 CB 5E 5F C9 FE 46 -- 03C1B0
CB 5E 5F C9 C0 2B 00 54 5A E1 9A 00 54 9D 35 9A -- 03C1C0
2B 00 54 5A E1 9A 00 54 9D 35 9A EC 8B 55 57 56 -- 03C1D0
00 00 C8 46 C7 00 00 5C C8 57 56 CB 5E 5F C9 C0 -- 03C1E0
16 00 00 CE 46 C7 00 00 CC 46 C7 00 00 CA 46 C7 -- 03C1F0
8D 16 04 C4 83 00 5C E0 79 9A 50 D0 46 8D 01 FE -- 03C200
9B D0 46 DF 9B 04 C4 83 00 1C FC 83 9A 50 D0 46 -- 03C210
D1 B8 3E C5 2E F8 5E D9 9B D2 46 DF 9B FC 5E D9 -- 03C220
```

271

```
3E  C5  2E  B4  5E  DD  9B  D2  88  OE  DC  2E  9B  05  D9  9B  --  03C230
D9  9B  BC  5E  DD  9B  B4  66  DC  9B  04  45  D9  9B  D1  F6  --  03C240
3E  C5  2E  3F  73  00  5C  ED  94  9A  BC  5E  DC  9B  FC  46  --  03C250
2E  B4  5E  DD  9B  D2  88  OE  DC  2E  9B  05  D9  9B  D1  CO  --  03C260
9B  BC  5E  DD  9B  B4  46  DC  9B  05  D9  9B  D1  FE  3E  C5  --  03C270
46  C7  07  77  00  5C  ED  94  9A  BC  5E  DC  9B  F8  46  D9  --  03C280
CO  3E  C5  2E  3D  EB  00  02  C6  46  C7  44  EB  00  00  C6  --  03C290
C5  2E  B4  5E  DD  9B  D2  88  OE  DC  2E  9B  05  D9  9B  D1  --  03C2A0
D9  9B  BC  5E  DD  9B  B4  46  DC  9B  05  D9  9B  D1  FE  3E  --  03C2B0
C6  46  C7  07  77  00  5C  ED  94  9A  BC  5E  DC  9B  F8  46  --  03C2C0
03  2E  E7  D1  C6  7E  8B  00  03  C6  46  C7  05  EB  00  01  --  03C2D0
3E  C5  2E  CO  46  89  05  8B  D1  6E  1E  8E  2E  D1  6C  3E  --  03C2E0
5C  3E  C5  2E  D1  84  36  C4  2E  C2  46  89  05  8B  D1  DC  --  03C2F0
7E  C5  0A  75  CO  46  23  C2  46  23  04  23  26  05  8B  D1  --  03C300
C6  7E  8B  D1  A0  36  C4  2E  01  90  E9  00  02  05  C7  0A  --  03C310
46  D9  9B  D1  F8  1E  8E  2E  D1  F6  3E  03  2E  02  E7  C1  --  03C320
BO  36  C4  2E  FC  5E  D9  9B  34  D8  26  9B  25  D8  9B  FC  --  03C330
00  1E  8E  2E  D1  FE  3E  03  2E  02  E7  C1  C6  7E  8B  D1  --  03C340
F8  5E  D9  9B  34  D8  26  9B  F8  66  D8  9B  05  D9  9B  D2  --  03C350
9B  BC  5E  DD  9B  25  D8  9B  EE  D9  9B  D1  C4  3E  C5  2E  --  03C360
C5  2E  90  72  00  5C  ED  94  9A  BC  5E  DC  9B  FC  46  D9  --  03C370
B4  5E  DD  9B  D1  A8  06  DC  2E  9B  05  D9  9B  D1  C4  3E  --  03C380
E9  03  76  00  5C  ED  94  9A  B4  5E  DC  9B  FC  46  D9  9B  --  03C390
5E  DD  9B  25  D8  9B  EE  D9  9B  D1  C4  3E  C5  2E  FF  6C  --  03C3A0
03  73  00  5C  ED  94  9A  AC  5E  DC  9B  F8  46  D9  9B  AC  --  03C3B0
A8  06  DC  2E  9B  05  D9  9B  D1  C4  3E  C5  2E  FF  4B  E9  --  03C3C0
ED  94  9A  A4  5E  DC  9B  F8  46  D9  9B  A4  5E  DD  9B  D1  --  03C3D0
66  D8  9B  D1  A8  06  DD  2E  9B  FF  27  E9  03  76  00  5C  --  03C3E0
9B  F8  66  D8  9B  D1  A8  06  DD  2E  9B  FC  5E  D9  9B  FC  --  03C3F0
2E  0C  75  00  3D  83  D2  2C  3E  C5  2E  F8  5E  D9  01  FE  --  03C400
D2  28  3E  C5  2E  0A  EB  D1  70  36  FF  2E  D1  72  36  FF  --  03C410
2E  D1  66  36  FF  2E  50  C8  46  8D  16  35  FF  02  75  FF  --  03C420
8D  16  D1  60  36  FF  2E  D1  62  36  FF  2E  D1  64  36  FF  --  03C430

D1  DC  36  C4  2E  C6  76  FF  50  FC  46  8D  16  50  F8  46  --  03C440
00  34  03  25  9A  50  04  23  26  05  8B  D1  84  3E  C5  2E  --  03C450
46  8D  16  50  C8  46  8D  16  00  00  C4  46  C7  1C  C4  83  --  03C460
7E  83  25  75  CO  0B  08  C4  83  00  2C  B6  2C  9A  50  C4  --  03C470
B2  9A  05  74  00  3D  83  D2  78  3E  C5  2E  0F  74  00  C4  --  03C480
29  9A  00  2C  CC  CD  9A  0A  74  00  C4  7E  83  00  54  99  --  03C490
5F  C9  9B  00  01  B8  00  01  05  C7  0A  7E  C5  00  54  12  --  03C4A0
FA  46  C7  00  00  F8  46  C7  00  00  2E  C8  57  56  CB  5E  --  03C4B0
06  DD  2E  9B  00  00  FE  46  C7  00  00  FC  46  C7  00  00  --  03C4C0
E8  5E  D9  9B  D2  98  06  DD  2E  9B  E4  5E  D9  9B  D2  90  --  03C4D0
D2  A8  06  DD  2E  9B  EC  5E  D9  9B  D2  A0  06  DD  2E  9B  --  03C4E0
2E  9B  D4  5E  D9  9B  D2  BO  06  DD  2E  9B  FO  5E  D9  9B  --  03C4F0
D9  9B  D2  CO  06  DD  2E  9B  D8  5E  D9  9B  D2  B8  06  DD  --  03C500
00  D2  46  C7  EO  5E  D9  9B  D2  88  06  DD  2E  9B  DC  5E  --  03C510
BC  E9  00  01  B8  06  75  00  3D  83  D1  DC  3E  C5  2E  00  --  03C520
0C  7E  83  0C  7F  03  0A  7E  83  12  7C  00  0A  7E  83  00  --  03C530
83  00  9E  E9  00  02  B8  06  7E  05  0C  7E  83  06  7C  00  --  03C540
9B  1F  16  FD  03  02  E7  C1  0A  7E  8B  10  7D  04  0C  7E  --  03C550
9B  1F  16  FD  03  02  E7  C1  0A  7E  8B  0E  EB  E4  45  D9  --  03C560
66  36  FF  2E  50  F8  46  8D  16  F4  5E  D9  9B  D4  45  D9  --  03C570
D1  60  36  FF  2E  D1  62  36  FF  2E  D1  64  36  FF  2E  D1  --  03C580
DC  36  C4  2E  0C  76  FF  00  5C  ED  99  9A  F4  46  D9  9B  --  03C590
34  0F  9F  9A  50  04  23  26  05  8B  D1  84  3E  C5  2E  D1  --  03C5A0
2C  9A  50  D2  46  8D  16  50  F8  46  8D  16  18  C4  83  00  --  03C5B0
78  3E  C5  2E  0F  74  00  D2  7E  83  08  C4  83  00  2C  B6  --  03C5C0
74  00  D2  7E  83  00  54  99  B2  9A  05  74  00  3D  83  D2  --  03C5D0
```

272

```
5F C9 9B CO 2B 00 54 12 29 9A 00 2C CC CD 9A 0A -- 03C5E0
FC 46 C7 00 00 FE 46 C7 00 00 B6 C8 57 56 CB 5E -- 03C5F0
03 E7 D1 FC 7E 8B 1E 7D 04 FC 7E 83 00 00 01 FE -- 03C600
01 05 C7 0A 7E C5 09 74 00 3D 83 10 5E FF 05 EB 00 -- 03C610
05 75 00 3D 83 0A 7E C5 DC EB FC 46 FF 05 EB 00 -- 03C620
46 8D 16 06 05 C6 D1 C8 3E C5 2E 05 B2 E9 CO 2B -- 03C630
DO 9A 6E 6A 05 6A 01 6A 57 D1 CA 36 FF 2E 50 FE -- 03C640
E9 FE 76 FF 06 74 00 FE 7E 83 0E C4 83 00 64 40 -- 03C650
88 E4 2A FF 4E 86 88 CO 2B 02 FF 4C 86 C6 05 7D -- 03C660
00 00 FC 46 C7 FF 50 9E D9 9B EE D9 9B FF 4D 86 -- 03C670
5E 8E 0E 7E 03 E7 D1 FC 7E 8B 65 7D 04 FC 7E 83 -- 03C680
FF 50 86 8D 16 50 FE 46 8D 16 50 74 00 3D 83 10 -- 03C690
06 03 2E 03 E0 C1 FC 46 8B 50 FF 4C 86 8D 16 50 -- 03C6A0
2E 03 E0 C1 FC 46 8B 50 52 D1 FC 16 8B 2E D1 FA -- 03C6B0
68 0B 6A 01 6A 50 52 D1 F4 16 8B 2E D1 F2 06 03 -- 03C6C0
06 74 00 FE 7E 83 1A C4 83 00 64 40 DO 9A 00 CC -- 03C6D0
10 76 FF 0F 6A 95 EB FC 46 FF 05 01 E9 FE 46 8B -- 03C6E0
FE 46 89 08 C4 83 00 2C C9 60 9A 00 6A 0E 76 FF -- 03C6F0
76 FF 10 76 FF 0F 6A 00 6A 04 E0 E9 03 74 CO 0B -- 03C700
0E C4 83 00 2C BC 24 9A 06 04 68 01 6A 09 6A 0E -- 03C710
24 3E C5 2E CO 2B 04 BD E9 03 74 CO 0B FE 46 89 -- 03C720
C5 2E CO 2B 05 89 02 45 89 04 45 89 06 45 89 D1 -- 03C730
46 C7 05 89 02 45 89 04 45 89 06 45 89 D1 28 3E -- 03C740
D1 FC 7E 8B 02 DA E9 03 7C 04 FC 7E 83 00 00 FC -- 03C750
2E 02 C1 E9 03 75 00 3D 83 10 5E 8E 0E 7E 03 E7 -- 03C760
74 3E C5 2E 04 21 E9 03 74 00 3D 83 D2 2C 3E C5 -- 03C770
8B 2E D1 70 06 03 2E 09 E0 C1 FC 46 8B 35 FF D1 -- 03C780
17 74 00 3D 83 D2 C8 3E C5 2E 04 1E E9 D1 72 16 -- 03C790
9A 01 6A FC 76 FF D1 64 36 FF 2E D1 66 36 FF 2E -- 03C7A0
8C C5 03 14 FC 46 6B 57 56 08 C4 83 00 34 1F 2F -- 03C7B0
2E D2 1C 06 03 2E 14 FC 46 6B 50 52 00 54 2D D2 -- 03C7C0
56 5E 5F 00 5C FF 6A 9A 0A 6A 50 52 D2 1E 16 8B -- 03C7D0

46 6B 50 52 00 A4 2D D2 8C C5 03 14 FC 46 6B 57 -- 03C7E0
0A 6A 50 52 D2 26 16 8B 2E D2 24 06 03 2E 14 FC -- 03C7F0
D9 9B D1 BO 3E C5 2E 5E 5F 00 5C FF 6A 9A 01 FE -- 03C800
99 9A 05 D9 9B D1 A0 3E C5 2E 00 5C ED 99 9A 05 -- 03C810
8E 2E D1 FE 3E 03 2E 02 E7 C1 FC 7E 8B 00 5C ED -- 03C820
E7 C1 FC 7E 8B 00 5C ED 99 9A 05 D9 9B D2 00 1E -- 03C830
99 9A 05 D9 9B D1 F8 1E 8E 2E D1 F6 3E 03 2E 02 -- 03C840
26 16 8B 2E D2 24 06 03 2E 14 FC 46 6B 00 5C ED -- 03C850
22 16 8B 2E D2 20 06 03 2E 14 FC 46 6B 50 52 D2 -- 03C860
1E 16 8B 2E D2 1C 06 03 2E 14 FC 46 6B 50 52 D2 -- 03C870
1A 16 8B 2E D2 18 06 03 2E 18 FC 46 6B 50 52 D2 -- 03C880
46 6B 32 C4 83 00 34 2A 1D 9A FC 76 FF 50 52 D2 -- 03C890
46 6B D2 1E 06 8E 2E D2 1C 1E 03 2E D8 8B 14 FC -- 03C8A0
26 9B BC 45 D9 9B FE 03 1F 16 FD 8B FO 8B 14 FC -- 03C8B0
2B 02 EB 00 01 B9 05 74 00 5C ED 94 9A 10 5F D8 -- 03C8C0
1E 06 8E 2E D2 1C 1E 03 2E D8 8B 14 FC 46 6B C9 -- 03C8D0
45 D9 9B FE 03 1F 16 FD 8B FO 8B 14 FC 46 6B D2 -- 03C8E0
EB 00 01 B8 05 74 00 5C ED 94 9A 1F D8 26 9B AC -- 03C8F0
24 3E 03 2E E7 D1 FC 7E 8B 13 74 C1 0B CO 2B 02 -- 03C900
D8 8B 14 FC 46 6B 00 01 05 C7 D1 26 1E 8E 2E D1 -- 03C910
FO 8B 14 FC 46 6B D2 26 06 8E 2E D2 24 1E 03 2E -- 03C920
10 5F D8 26 9B FF 6C 85 D9 9B FE 03 1F 16 FD 8B -- 03C930
46 6B C9 2B 02 EB 00 01 B9 05 74 00 5C ED 94 9A -- 03C940
46 6B D2 26 06 8E 2E D2 24 1E 03 2E D8 8B 14 FC -- 03C950
9B FF 5C 85 D9 9B FE 03 1F 16 FD 8B FO 8B 14 FC -- 03C960
2B 02 EB 00 01 B8 05 74 00 5C ED 94 9A 1F D8 26 -- 03C970
2E D1 28 3E 03 2E E7 D1 FC 7E 8B 13 74 C1 0B CO -- 03C980
```

```
FC 7E 8B D1 CC 36 C4 2E 00 01 05 C7 D1 2A 1E 8E -- 03C990
0B 26 05 8B D1 6E 1E 8E 2E D1 6C 3E 03 2E E7 D1 -- 03C9A0
00 3D 83 D2 2C 3E C5 2E 05 89 D1 CC 3E C5 2E 04 -- 03C9B0
FC 76 8B FF 4A 86 89 05 8B D1 84 3E C5 2E 70 75 -- 03C9C0
5C 3E C5 2E D1 6E 06 8E 2E D1 6C 36 03 2E E6 D1 -- 03C9D0
FE 46 8D 16 46 74 FF 4A 86 23 04 23 26 05 8B D1 -- 03C9E0
E0 C1 FC 46 8B 35 FF 02 75 FF D1 8C 3E C5 2E 50 -- 03C9F0
FF 50 52 D1 72 16 8B 2E D1 70 06 03 2E 09 01 FE -- 03CA00
09 6A 50 E4 2A 05 8A D1 88 3E C5 2E 00 6A FC 76 -- 03CA10
74 00 FE 7E 83 16 C4 83 00 64 40 D0 9A 01 45 68 -- 03CA20
6A 50 AC 46 8D 16 FD 1D E9 FC 46 FF FC 2C E9 03 -- 03CA30
BE 41 9A 00 6A 00 6A 00 6A 0E 76 FF 10 76 FF 0F -- 03CA40
16 01 8C E9 03 74 C0 0B FE 46 89 10 C4 83 00 2C -- 03CA50
6A 01 6A 0E 76 FF 10 76 FF 0F 6A 50 FF 5C 86 8D -- 03CA60
C0 0B FE 46 89 10 C4 83 00 2C BE 41 9A 01 6A 00 -- 03CA70
6A 0E 76 FF 10 76 FF 0F 6A 01 6A 01 66 E9 03 74 -- 03CA80
83 00 2C BC 24 9A 00 6A 35 FF D2 64 3E C5 2E 09 -- 03CA90
1C 06 8B 2E 01 3F E9 03 74 C0 0B FE 46 89 0E C4 -- 03CAA0
8B 2E FF 5A 96 89 FF 58 86 89 D2 1E 16 8B 2E D2 -- 03CAB0
FF 56 96 89 FF 54 86 89 D2 26 16 8B 2E D2 24 06 -- 03CAC0
0E 76 FF 10 76 FF 0F 6A FF 58 B6 FF FF 5A B6 FF -- 03CAD0
46 89 10 C4 83 00 2C BE 41 9A 00 6A 09 6A 01 6A -- 03CAE0
FF 54 B6 FF FF 56 B6 FF 00 F3 E9 03 74 C0 0B FE -- 03CAF0
41 9A 01 6A 09 6A 01 6A 0E 76 FF 10 76 FF 0F 6A -- 03CB00
00 CB E9 03 74 C0 0B FE 46 89 10 C4 83 00 2C BE -- 03CB10
45 89 04 45 89 06 45 89 D1 24 3E C5 2E 00 01 B8 -- 03CB20
45 89 06 45 89 D1 28 3E C5 2E 00 01 B8 05 89 02 -- 03CB30
09 6A 0E 76 FF 10 76 FF 0F 6A 05 89 02 45 89 04 -- 03CB40
E9 03 74 C0 0B FE 46 89 08 C4 83 00 2C C9 60 9A -- 03CB50
2E 50 FE 46 8D 16 16 05 C6 D1 C8 3E C5 2E 00 89 -- 03CB60
00 64 40 D0 9A 6E 6A 05 6A 01 6A 57 D1 CA 36 FF -- 03CB70

2C 3E C5 2E FB 58 E9 03 74 00 FE 7E 83 0E C4 83 -- 03CB80
93 E9 00 5C 57 42 9A FA 9B E9 03 75 00 3D 83 D2 -- 03CB90
FC 46 8B D2 28 3E C5 2E 35 FF D1 74 3E C5 2E FA -- 03CBA0
09 E0 C1 FC 46 8B 50 52 02 55 8B 05 03 09 E0 C1 -- 03CBB0
01 6A 02 6A 50 52 D1 62 16 8B 2E D1 60 06 03 2E -- 03CBC0
E9 03 75 C0 0B FE 46 89 0E C4 83 00 5C F6 28 9A -- 03CBD0
CB 5E 5F C9 9B 02 C4 83 00 2C D0 F8 9A 50 FB B8 -- 03CBE0
50 FC 46 8D 16 00 00 FC 46 C7 00 00 04 C8 57 56 -- 03CBF0
D2 CC 3E C5 2E 0A 76 FF 0C 76 FF 0E 76 FF 01 FE -- 03CC00
83 10 C4 83 00 64 40 D0 9A 01 2E 68 06 6A 35 FF -- 03CC10
02 C4 83 00 2C D0 F8 9A FC 76 FF 0E 74 00 FC 7E -- 03CC20
6A 35 FF D2 CC 3E C5 2E 50 FC 46 8D 16 00 E8 E9 -- 03CC30
00 FC 7E 83 0A C4 83 00 64 40 D0 9A 01 2D 68 03 -- 03CC40
00 B9 E9 03 7C 04 FE 7E 83 00 00 FE 46 C7 D3 75 -- 03CC50
03 75 00 3D 83 12 5E 8E 10 7E 03 E7 D1 FE 7E 8B -- 03CC60
1E 8E 2E D1 6C 3E 03 2E E7 D1 FE 7E 8B 00 A0 E9 -- 03CC70
90 06 8B 2E 00 87 E9 03 75 14 46 23 05 8B D1 6E -- 03CC80
02 55 89 05 89 D2 D0 3E C5 2E D1 92 16 8B 2E D1 -- 03CC90
12 75 00 3D 83 D2 2C 3E C5 2E 30 74 00 16 7E 83 -- 03CCA0
D1 72 16 8B 2E D1 70 06 03 2E 09 E0 C1 FE 46 8B -- 03CCB0
04 03 26 09 E0 C1 FE 46 8B D2 28 36 C4 2E 24 EB -- 03CCC0
78 06 03 2E 09 E0 C1 FE 46 8B 10 EB 02 54 8B 26 -- 03CCD0
02 55 89 05 89 D2 D4 3E C5 2E D1 7A 16 8B 2E D1 -- 03CCE0
BD 51 9A D1 C8 36 FF 2E D1 CA 36 FF 2E FE 76 FF -- 03CCF0
01 B8 05 74 00 FC 7E 83 FC 46 89 06 C4 83 00 2C -- 03CD00
56 CB 5E 5F C9 C0 2B FF 3E E9 FE 46 FF 08 EB 00 -- 03CD10
02 45 8B 0A 7E C5 00 00 FE 46 C7 00 03 30 C8 57 -- 03CD20
89 08 55 8B 06 45 8B FA 56 89 F8 46 89 04 55 8B -- 03CD30
```

274

```
2E D2 04 06 8B 2E 00 00 FC 46 C7 F6 56 89 F4 46 -- 03CD40
FC 46 8B 0A 7E C5 F2 56 89 F0 46 89 D2 06 16 8B -- 03CD50
8E F8 7E 03 E7 D1 3D 8B F0 7E C5 6D 7F 0A 45 3B -- 03CD60
10 3E 03 2E 09 E7 C1 0E 7E 8B E6 D1 35 8B FA 5E -- 03CD70
03 E7 D1 FC 7E 8B 05 8B FE 03 D2 12 1E 8E 2E D2 -- 03CD80
3D 8B 02 F0 46 83 F0 7E C5 FE 60 85 89 1F 16 FD -- 03CD90
C1 0E 7E 8B E6 D1 35 8B F6 5E 8E F4 7E 03 E7 D1 -- 03CDA0
05 8B FE 03 D2 16 1E 8E 2E D2 14 3E 03 2E 09 E7 -- 03CDB0
FC 46 FF FC D0 85 89 1F 16 FD 03 E7 D1 FC 7E 8B -- 03CDC0
86 8D 16 50 FC D0 86 8D 16 50 FE 46 8D 16 88 EB -- 03CDD0
D0 9A 00 DB 68 07 6A 0A 75 FF 0A 7E C5 50 FE 60 -- 03CDE0
9A FE 76 FF 0D 74 00 FE 7E 83 12 C4 83 00 64 40 -- 03CDF0
5E 5F C9 C0 2B 02 EB 02 C4 83 00 2C D0 F8 01 FE -- 03CE00
00 0E 7E 83 00 00 EC 46 C7 00 00 1E C8 57 56 CB -- 03CE10
FF D2 64 3E C5 2E 0C 76 FF 50 EC 46 8D 16 58 75 -- 03CE20
9A 01 2E 68 06 6A 35 FF D2 CC 3E C5 2E 00 6A 35 -- 03CE30
EC 76 FF 0E 74 00 EC 7E 83 10 C4 83 00 64 40 D0 -- 03CE40
50 EC 46 8D 16 02 4C E9 02 C4 83 00 2C D0 F8 9A -- 03CE50
64 40 D0 9A 01 2D 68 03 6A 35 FF D2 CC 3E C5 2E -- 03CE60
03 74 00 0A 7E 83 D3 75 00 EC 7E 83 0A C4 83 00 -- 03CE70
14 E9 03 7C 04 EA 7E 83 00 00 EA 46 C7 01 11 E9 -- 03CE80
26 DC 2E 9B D1 A8 06 DD 2E 9B D1 A0 3E C5 2E 02 -- 03CE90
2E 02 E7 C1 EA 7E 8B E2 5E DD 9B 0D D8 9B D2 D8 -- 03CEA0
E2 66 DC 9B 05 D9 9B D2 00 1E 8E 2E D1 FE 3E 03 -- 03CEB0
9B D1 A8 06 DD 2E 9B D1 A0 3E C5 2E EE 5E D9 9B -- 03CEC0
C1 EA 7E 8B E2 5E DD 9B 0D D8 9B D2 E0 26 DC 2E -- 03CED0
9B 05 D9 9B D2 00 1E 8E 2E D1 FE 3E 03 2E 02 E7 -- 03CEE0
8E 10 7E 03 E7 D1 EA 7E 8B F2 5E D9 9B E2 66 DC -- 03CEF0
2E E7 D1 EA 7E 8B 00 84 E9 03 75 00 3D 83 12 5E -- 03CF00
7E 8B 70 74 00 3D 83 D1 26 1E 8E 2E D1 24 3E 03 -- 03CF10

14 46 8B D1 6E 1E 8E 2E D1 6C 3E 03 2E E7 D1 EA -- 03CF20
8B 4F 7D 05 FE 7E 83 00 00 FE 46 C7 5A 74 05 23 -- 03CF30
5E 8E 16 7E 03 F8 8B 14 EA 46 6B 02 E6 C1 FE 76 -- 03CF40
D9 9B F6 46 D9 9B F6 5E D9 9B 05 D9 9B FE 03 18 -- 03CF50
F6 46 8D 16 50 EE 46 8D 16 50 EC 46 8D 16 FA 5E -- 03CF60
12 C4 83 00 64 40 D0 9A 00 C9 68 07 6A 02 6A 50 -- 03CF70
46 FF AB EB FE 46 FF FE C4 E9 03 74 00 EC 7E 83 -- 03CF80
E9 03 7C 04 EA 7E 83 00 00 EA 46 C7 FE F4 E9 EA -- 03CF90
DC 2E 9B D1 A8 06 DD 2E 9B D1 A0 3E C5 2E 01 03 -- 03CFA0
02 E7 C1 EA 7E 8B E2 5E DD 9B 0D D8 9B D2 D8 26 -- 03CFB0
46 DC 9B 05 D9 9B D1 F8 1E 8E 2E D1 F6 3E 03 2E -- 03CFC0
D1 A8 06 DD 2E 9B D1 A0 3E C5 2E F6 5E D9 9B E2 -- 03CFD0
EA 7E 8B E2 5E DD 9B 0D D8 9B D2 E0 26 DC 2E 9B -- 03CFE0
05 D9 9B D1 F8 1E 8E 2E D1 F6 3E 03 2E 02 E7 C1 -- 03CFF0
03 E7 D1 EA 7E 8B FA 5E D9 9B E2 46 DC 9B 01 FE -- 03D000
EA 7E 8B 00 84 E9 03 75 00 3D 83 12 5E 8E 10 7E -- 03D010
74 00 3D 83 D1 2A 1E 8E 2E D1 28 3E 03 2E E7 D1 -- 03D020
D1 6E 1E 8E 2E D1 6C 3E 03 2E E7 D1 EA 7E 8B 70 -- 03D030
05 FE 7E 83 00 00 FE 46 C7 5A 74 05 23 14 46 8B -- 03D040
7E 03 F8 8B 14 EA 46 6B 02 E6 C1 FE 76 8B 4F 7D -- 03D050
46 D9 9B EE 5E D9 9B 05 D9 9B FE 03 18 5E 8E 16 -- 03D060
16 50 EE 46 8D 16 50 EC 46 8D 16 F2 5E D9 9B EE -- 03D070
00 64 40 D0 9A 00 C9 68 07 6A 02 6A 50 F6 46 8D -- 03D080
EB FE 46 FF FD B3 E9 03 74 00 EC 7E 83 12 C4 83 -- 03D090
57 56 CB 5E 5F C9 9B C0 2B FE F4 E9 EA 46 FF AB -- 03D0A0
0A 7E C5 02 45 8B 3D C5 D2 E8 3E C5 2E EC 8B 55 -- 03D0B0
36 C4 2E EC 8B 55 57 56 CB 5E 5F C9 C0 2B 05 89 -- 03D0C0
0A 7E C5 40 04 23 26 05 8B D1 84 3E C5 2E D1 DC -- 03D0D0
3E C5 2E EC 8B 55 57 56 CB 5E 5F C9 C0 2B 05 89 -- 03D0E0
```

275

```
56 CB 5E 5F C9 C0 2B 05 89 00 0E 25 05 8B D1 DC -- 03D0F0
05 89 00 0D 25 05 8B D1 DC 3E C5 2E EC 8B 55 57 -- 03D100
D1 DC 3E C5 2E EC 8B 55 57 56 CB 5E 5F C9 C0 2B -- 03D110
55 57 56 CB 5E 5F C9 C0 2B 05 89 00 0B 25 05 8B -- 03D120
C0 2B 05 89 00 07 25 05 8B D1 DC 3E C5 2E EC 8B -- 03D130
00 2C C3 D2 9A 01 6A EC 8B 55 57 56 CB 5E 5F C9 -- 03D140
D2 9A 02 6A EC 8B 55 57 56 CB 5E 5F C9 02 C4 83 -- 03D150
6A EC 8B 55 57 56 CB 5E 5F C9 02 C4 83 00 2C C3 -- 03D160
55 57 56 CB 5E 5F C9 02 C4 83 00 2C C3 D2 9A 03 -- 03D170
CB 5E 5F C9 02 C4 83 00 2C C3 D2 9A 04 6A EC 8B -- 03D180
C9 02 C4 83 00 2C C4 85 9A 01 6A EC 8B 55 57 56 -- 03D190
83 00 2C C4 85 9A 02 6A EC 8B 55 57 56 CB 5E 5F -- 03D1A0
C4 85 9A 03 6A EC 8B 55 57 56 CB 5E 5F C9 02 C4 -- 03D1B0
04 6A EC 8B 55 57 56 CB 5E 5F C9 02 C4 83 00 2C -- 03D1C0
8B 55 57 56 CB 5E 5F C9 02 C4 83 00 2C C4 85 9A -- 03D1D0
56 CB 5E 5F C9 02 C4 83 00 2C C5 38 9A 01 6A EC -- 03D1E0
5F C9 02 C4 83 00 2C C5 38 9A 02 6A EC 8B 55 57 -- 03D1F0
00 2C C5 38 9A 03 6A EC 8B 55 57 56 CB 5E 01 FE -- 03D200
38 9A 04 6A EC 8B 55 57 56 CB 5E 5F C9 02 C4 83 -- 03D210
6A EC 8B 55 57 56 CB 5E 5F C9 02 C4 83 00 2C C5 -- 03D220
55 57 56 CB 5E 5F C9 02 C4 83 00 2C C5 EB 9A 01 -- 03D230
CB 5E 5F C9 02 C4 83 00 2C C5 EB 9A 02 6A EC 8B -- 03D240
C9 02 C4 83 00 2C C5 EB 9A 03 6A EC 8B 55 57 56 -- 03D250
83 00 2C C5 EB 9A 04 6A EC 8B 55 57 56 CB 5E 5F -- 03D260
C6 9E 9A 01 6A EC 8B 55 57 56 CB 5E 5F C9 02 C4 -- 03D270
02 6A EC 8B 55 57 56 CB 5E 5F C9 02 C4 83 00 2C -- 03D280
8B 55 57 56 CB 5E 5F C9 02 C4 83 00 2C C6 9E 9A -- 03D290
56 CB 5E 5F C9 02 C4 83 00 2C C6 9E 9A 03 6A EC -- 03D2A0
5F C9 02 C4 83 00 2C C6 9E 9A 04 6A EC 8B 55 57 -- 03D2B0

C4 83 00 2C C7 51 9A 01 6A EC 8B 55 57 56 CB 5E -- 03D2C0
2C C7 51 9A 02 6A EC 8B 55 57 56 CB 5E 5F C9 02 -- 03D2D0
9A 03 6A EC 8B 55 57 56 CB 5E 5F C9 02 C4 83 00 -- 03D2E0
EC 8B 55 57 56 CB 5E 5F C9 02 C4 83 00 2C C7 51 -- 03D2F0
57 56 CB 5E 5F C9 02 C4 83 00 2C C7 51 9A 04 6A -- 03D300
5E 5F C9 02 C4 83 00 2C C8 04 9A 01 6A EC 8B 55 -- 03D310
02 C4 83 00 2C C8 04 9A 02 6A EC 8B 55 57 56 CB -- 03D320
00 2C C8 04 9A 03 6A EC 8B 55 57 56 CB 5E 5F C9 -- 03D330
04 9A 04 6A EC 8B 55 57 56 CB 5E 5F C9 02 C4 83 -- 03D340
6A EC 8B 55 57 56 CB 5E 5F C9 02 C4 83 00 2C C8 -- 03D350
55 57 56 CB 5E 5F C9 02 C4 83 00 2C C8 B2 9A 01 -- 03D360
CB 5E 5F C9 02 C4 83 00 2C C8 B2 9A 02 6A EC 8B -- 03D370
C9 02 C4 83 00 2C C8 B2 9A 03 6A EC 8B 55 57 56 -- 03D380
83 00 2C C8 B2 9A 04 6A EC 8B 55 57 56 CB 5E 5F -- 03D390
06 FE 46 C7 00 00 10 C8 57 56 CB 5E 5F C9 02 C4 -- 03D3A0
00 00 FA 46 C7 00 00 F8 46 C7 00 00 F6 46 C7 00 -- 03D3B0
0A 7E 8B 0A 4E FF 00 00 F0 46 C7 00 00 FC 46 C7 -- 03D3C0
05 D9 9B D2 EE 1E 8E 2E D2 EC 3E 03 2E 02 E7 C1 -- 03D3D0
FF 2E D1 66 36 FF 2E 50 F6 46 8D 16 F2 5E D9 9B -- 03D3E0
46 D9 9B D1 60 36 FF 2E D1 62 36 FF 2E D1 64 36 -- 03D3F0
D1 DC 36 C4 2E FE 76 FF 00 5C ED 99 9A F2 01 FE -- 03D400
00 34 0F 9F 9A 50 04 23 26 05 8B D1 84 3E C5 2E -- 03D410
B6 2C 9A 50 F0 46 8D 16 50 F6 46 8D 16 18 C4 83 -- 03D420
D2 78 3E C5 2E 0F 74 00 F0 7E 83 08 C4 83 00 2C -- 03D430
9A 00 2C CC CD 9A 00 54 99 B2 9A 05 74 00 3D 83 -- 03D440
00 10 C8 57 56 CB 5E 5F C9 9B C0 2B 00 54 12 29 -- 03D450
00 00 F8 46 C7 00 00 F6 46 C7 00 00 FE 46 C7 00 -- 03D460
FF 00 00 F0 46 C7 00 00 FC 46 C7 00 00 FA 46 C7 -- 03D470
1E 8E 2E D2 F0 3E 03 2E 02 E7 C1 0A 7E 8B 0A 4E -- 03D480
FF 2E 50 F6 46 8D 16 F2 5E D9 9B 05 D9 9B D2 F2 -- 03D490
```

276

```
36 FF 2E D1 62 36 FF 2E D1 64 36 FF 2E D1 66 36 -- 03D4A0
C4 2E FE 76 FF 00 5C ED 99 9A F2 46 D9 9B D1 60 -- 03D4B0
9F 9A 50 04 23 26 05 8B D1 84 3E C5 2E D1 DC 36 -- 03D4C0
50 F0 46 8D 16 50 F6 46 8D 16 18 C4 83 00 34 0F -- 03D4D0
C5 2E 0F 74 00 F0 7E 83 08 C4 83 00 2C B6 2C 9A -- 03D4E0
CC CD 9A 00 54 99 B2 9A 05 74 00 3D 83 D2 78 3E -- 03D4F0
57 56 CB 5E 5F C9 9B C0 2B 00 54 12 29 9A 00 2C -- 03D500
46 C7 00 00 F6 46 C7 00 02 FE 46 C7 00 00 10 C8 -- 03D510
F0 46 C7 00 00 FC 46 C7 00 00 FA 46 C7 00 00 F8 -- 03D520
D2 F0 3E 03 2E 02 E7 C1 0A 7E 8B 0A 4E FF 00 00 -- 03D530
F6 46 8D 16 F2 5E D9 9B 05 D9 9B D2 F2 1E 8E 2E -- 03D540
D1 62 36 FF 2E D1 64 36 FF 2E D1 66 36 FF 2E 50 -- 03D550
76 FF 00 5C ED 99 9A F2 46 D9 9B D1 60 36 FF 2E -- 03D560
04 23 26 05 8B D1 84 3E C5 2E D1 DC 36 C4 2E FE -- 03D570
8D 16 50 F6 46 8D 16 18 C4 83 00 34 0F 9F 9A 50 -- 03D580
74 00 F0 7E 83 08 C4 83 00 2C B6 2C 9A 50 F0 46 -- 03D590
00 54 99 B2 9A 05 74 00 3D 83 D2 78 3E C5 2E 0F -- 03D5A0
5E 5F C9 9B C0 2B 00 54 12 29 9A 00 2C CC CD 9A -- 03D5B0
00 F6 46 C7 00 01 FE 46 C7 00 00 10 C8 57 56 CB -- 03D5C0
00 00 FC 46 C7 00 00 FA 46 C7 00 00 F8 46 C7 00 -- 03D5D0
03 2E 02 E7 C1 0A 7E 8B 0A 4E FF 00 00 F0 46 C7 -- 03D5E0
16 F2 5E D9 9B 05 D9 9B D2 F2 1E 8E 2E D2 F0 3E -- 03D5F0
D1 64 36 FF 2E D1 66 36 FF 2E 50 F6 46 8D 01 FE -- 03D600
99 9A F2 46 D9 9B D1 60 36 FF 2E D1 62 36 FF 2E -- 03D610
D1 84 3E C5 2E D1 DC 36 C4 2E FE 76 FF 00 5C ED -- 03D620
8D 16 18 C4 83 00 34 0F 9F 9A 50 04 23 26 05 8B -- 03D630
08 C4 83 00 2C B6 2C 9A 50 F0 46 8D 16 50 F6 46 -- 03D640
05 74 00 3D 83 D2 78 3E C5 2E 0F 74 00 F0 7E 83 -- 03D650

2B 00 54 12 29 9A 00 2C CC CD 9A 00 54 99 B2 9A -- 03D660
03 FE 46 C7 00 00 10 C8 57 56 CB 5E 5F C9 9B C0 -- 03D670
00 00 FA 46 C7 00 00 F8 46 C7 00 00 F6 46 C7 00 -- 03D680
0A 7E 8B 0A 4E FF 00 00 F0 46 C7 00 00 FC 46 C7 -- 03D690
05 D9 9B D2 F2 1E 8E 2E D2 F0 3E 03 2E 02 E7 C1 -- 03D6A0
FF 2E D1 66 36 FF 2E 50 F6 46 8D 16 F2 5E D9 9B -- 03D6B0
46 D9 9B D1 60 36 FF 2E D1 62 36 FF 2E D1 64 36 -- 03D6C0
C5 2E D1 DC 36 C4 2E FE 76 FF 00 5C ED 99 9A F2 -- 03D6D0
C4 83 00 34 0F 9F 9A 50 04 23 26 05 8B D1 84 3E -- 03D6E0
00 2C B6 2C 9A 50 F0 46 8D 16 50 F6 46 8D 16 18 -- 03D6F0
3D 83 D2 78 3E C5 2E 0F 74 00 F0 7E 83 08 C4 83 -- 03D700
12 29 9A 00 2C CC CD 9A 00 54 99 B2 9A 05 74 00 -- 03D710
C7 00 00 10 C8 57 56 CB 5E 5F C9 9B C0 2B 00 54 -- 03D720
46 C7 00 00 F8 46 C7 00 00 F6 46 C7 00 04 FE 46 -- 03D730
0A 4E FF 00 00 F0 46 C7 00 00 FC 46 C7 00 00 FA -- 03D740
D2 EE 1E 8E 2E D2 EC 3E 03 2E 02 E7 C1 0A 7E 8B -- 03D750
66 36 FF 2E 50 F6 46 8D 16 F2 5E D9 9B 05 D9 9B -- 03D760
D1 60 36 FF 2E D1 62 36 FF 2E D1 64 36 FF 2E D1 -- 03D770
DC 36 C4 2E FE 76 FF 00 5C ED 99 9A F2 46 D9 9B -- 03D780
34 0F 9F 9A 50 04 23 26 05 8B D1 84 3E C5 2E D1 -- 03D790
2C 9A 50 F0 46 8D 16 50 F6 46 8D 16 18 C4 83 00 -- 03D7A0
78 3E C5 2E 0F 74 00 F0 7E 83 08 C4 83 00 2C B6 -- 03D7B0
00 2C CC CD 9A 00 54 99 B2 9A 05 74 00 3D 83 D2 -- 03D7C0
10 C8 57 56 CB 5E 5F C9 9B C0 2B 00 54 12 29 9A -- 03D7D0
00 F8 46 C7 00 00 F6 46 C7 00 05 FE 46 C7 00 00 -- 03D7E0
7E 8B 0A 4E FF 00 00 FC 46 C7 00 00 FA 46 C7 00 -- 03D7F0
D2 EE 1E 8E 2E D2 EC 3E 03 2E 02 E7 C1 0A 01 FE -- 03D800
66 36 FF 2E 50 F6 46 8D 16 F2 5E D9 9B 05 D9 9B -- 03D810
D1 60 36 FF 2E D1 62 36 FF 2E D1 64 36 FF 2E D1 -- 03D820
DC 36 C4 2E FE 76 FF 00 5C ED 99 9A F2 46 D9 9B -- 03D830
34 0F 9F 9A 50 04 23 26 05 8B D1 84 3E C5 2E D1 -- 03D840
```

277

```
2C  9A  50  F0  46  8D  16  50  F6  46  8D  16  18  C4  83  00  --  03D850
78  3E  C5  2E  0F  74  00  F0  7E  83  08  C4  83  00  2C  B6  --  03D860
00  2C  CC  CD  9A  00  54  99  B2  9A  05  74  00  3D  83  D2  --  03D870
10  C8  57  56  CB  5E  5F  C9  9B  C0  2B  00  54  12  29  9A  --  03D880
00  F8  46  C7  00  00  F6  46  C7  00  07  FE  46  C7  00  00  --  03D890
7E  8B  0A  4E  FF  00  00  FC  46  C7  00  00  FA  46  C7  00  --  03D8A0
D9  9B  D2  F2  1E  8E  2E  D2  F0  3E  03  2E  02  E7  C1  0A  --  03D8B0
2E  D1  66  36  FF  2E  50  F6  46  8D  16  F2  5E  D9  9B  05  --  03D8C0
D9  9B  D1  60  36  FF  2E  D1  62  36  FF  2E  D1  64  36  FF  --  03D8D0
2E  D1  DC  36  C4  2E  FE  76  FF  00  5C  ED  99  9A  F2  46  --  03D8E0
83  00  34  0F  9F  9A  50  04  23  26  05  8B  D1  84  3E  C5  --  03D8F0
2C  B6  2C  9A  50  F0  46  8D  16  50  F6  46  8D  16  18  C4  --  03D900
83  D2  78  3E  C5  2E  0F  74  00  F0  7E  83  08  C4  83  00  --  03D910
29  9A  00  2C  CC  CD  9A  00  54  99  B2  9A  05  74  00  3D  --  03D920
00  00  30  C8  57  56  CB  5E  5F  C9  9B  C0  2B  00  54  12  --  03D930
05  75  00  0A  7E  83  00  04  D8  46  C7  00  00  FE  46  C7  --  03D940
6A  02  6A  0A  76  FF  50  FE  46  8D  16  00  02  D8  46  C7  --  03D950
40  D0  9A  01  30  68  06  6A  35  FF  D2  CC  3E  C5  2E  01  --  03D960
F8  9A  FE  76  FF  0E  74  00  FE  7E  83  10  C4  83  00  64  --  03D970
C5  2E  50  FE  46  8D  16  01  4C  E9  02  C4  83  00  2C  D0  --  03D980
83  00  64  40  D0  9A  01  2F  68  03  6A  35  FF  D2  CC  3E  --  03D990
DA  7E  83  00  00  DA  46  C7  D3  75  00  FE  7E  83  0A  C4  --  03D9A0
5E  8E  0C  7E  03  E7  D1  DA  7E  8B  01  1D  E9  03  7C  04  --  03D9B0
46  8B  00  01  DC  46  C7  01  04  E9  03  75  00  3D  83  0E  --  03D9C0
6B  02  E6  C1  DC  76  8B  00  CA  E9  03  7C  D8  46  3B  DC  --  03D9D0
03  D2  1E  1E  8E  2E  D2  1C  3E  03  2E  F8  8B  14  DA  46  --  03D9E0
D9  9B  1F  16  FD  03  02  E7  C1  DC  7E  8B  05  D9  9B  FE  --  03D9F0

8E  2E  D1  6C  3E  03  2E  E7  D1  DA  7E  8B  EE  5D  01  FE  --  03DA00
5E  DD  9B  E8  D9  9B  23  74  10  46  23  05  8B  D1  6E  1E  --  03DA10
D8  9B  E8  D9  9B  1F  16  FD  03  02  E7  C1  DC  7E  8B  D0  --  03DA20
DC  76  8B  D8  DD  9B  D0  46  DC  9B  EE  55  D9  9B  EE  6D  --  03DA30
8E  2E  D2  20  3E  03  2E  F8  8B  14  DA  46  6B  02  E6  C1  --  03DA40
FD  03  02  E7  C1  DC  7E  8B  05  D9  9B  FE  03  D2  22  1E  --  03DA50
D1  6C  3E  03  2E  E7  D1  DA  7E  8B  DE  5D  D9  9B  1F  16  --  03DA60
9B  E8  D9  9B  23  74  10  46  23  05  8B  D1  6E  1E  8E  2E  --  03DA70
E8  D9  9B  1F  16  FD  03  02  E7  C1  DC  7E  8B  D0  5E  DD  --  03DA80
FF  D8  DD  9B  D0  46  DC  9B  DE  55  D9  9B  DE  6D  D8  9B  --  03DA90
16  50  E2  46  8D  16  50  FE  46  8D  16  FF  2B  E9  DC  46  --  03DAA0
D0  9A  00  CA  68  07  6A  50  48  D8  46  8B  50  F2  46  8D  --  03DAB0
FF  FE  AE  E9  03  74  00  FE  7E  83  12  C4  83  00  64  40  --  03DAC0
0A  C8  57  56  CB  5E  5F  C9  9B  C0  2B  FE  DA  E9  DA  46  --  03DAD0
01  F8  46  C7  00  01  F6  46  C7  00  00  FE  46  C7  00  00  --  03DAE0
D1  C8  3E  C5  2E  00  01  FC  46  C7  00  01  FA  46  C7  00  --  03DAF0
01  6A  57  D1  CA  36  FF  2E  50  FE  46  8D  16  06  05  C6  --  03DB00
00  FE  7E  83  0E  C4  83  00  64  40  D0  9A  6E  6A  05  6A  --  03DB10
00  B9  E9  02  C4  83  00  2C  D0  F8  9A  FE  76  FF  0E  74  --  03DB20
04  68  00  6A  0A  76  FF  50  F6  46  8D  16  0F  6A  00  6A  --  03DB30
D1  CC  3E  C5  2E  01  6A  0E  C4  83  00  2C  BC  24  9A  06  --  03DB40
FF  D2  64  3E  C5  2E  0A  76  FF  50  F6  46  8D  16  35  FF  --  03DB50
D2  1E  36  FF  2E  0E  C4  83  00  2C  BC  24  9A  00  6A  35  --  03DB60
76  FF  01  6A  50  F6  46  8D  16  0F  6A  D2  1C  36  FF  2E  --  03DB70
D2  26  36  FF  2E  10  C4  83  00  2C  BE  41  9A  01  6A  0A  --  03DB80
76  FF  01  6A  50  F6  46  8D  16  0F  6A  D2  24  36  FF  2E  --  03DB90
46  8D  16  0F  6A  10  C4  83  00  2C  BE  41  9A  02  6A  0A  --  03DBA0
3E  C5  2E  08  C4  83  00  2C  C9  60  9A  0A  76  FF  50  F6  --  03DBB0
57  D1  CA  36  FF  2E  50  FE  46  8D  16  16  05  C6  D1  C8  --  03DBC0
7E  83  0E  C4  83  00  64  40  D0  9A  6E  6A  05  6A  01  6A  --  03DBD0
55  57  56  CB  5E  5F  C9  C0  2B  FF  3B  E9  03  74  00  FE  --  03DBE0
CB  5E  5F  C9  02  C4  83  00  2C  CB  00  9A  09  6A  EC  8B  --  03DBF0
```

```
C4 83 00 2C CB 00 9A 00 6A EC 8B 55 57 56 01 FE  -- 03DC00
83 D2 64 3E C5 2E EC 8B 55 57 56 CB 5E 5F C9 02  -- 03DC10
C5 2E 00 2C CC 24 9A 15 EB 00 01 B8 05 74 00 3D  -- 03DC20
5F C9 C0 2B 00 2C CC 11 9A 00 01 05 C7 D2 64 3E  -- 03DC30
02 3D 05 8B D2 64 3E C5 2E EC 8B 55 57 56 CB 5E  -- 03DC40
3E C5 2E 00 2C CC 24 9A 15 EB 00 01 B8 05 75 00  -- 03DC50
5E 5F C9 C0 2B 00 2C CC 11 9A 00 02 05 C7 D2 64  -- 03DC60
05 74 00 3D 83 D2 F4 3E C5 2E EC 8B 55 57 56 CB  -- 03DC70
FF 2E 00 01 05 C7 D2 F4 3E C5 2E 22 EB 00 01 B8  -- 03DC80
04 C4 83 00 14 F4 F5 9A D2 F8 36 FF 2E D2 FA 36  -- 03DC90
00 9A C8 57 56 CB 5E 5F C9 C0 2B 00 2C CC CD 9A  -- 03DCA0
52 FF 68 86 C6 54 FF 67 86 C6 53 FF 66 86 C6 00  -- 03DCB0
C6 20 FF 6B 86 C6 20 FF 6A 86 C6 54 FF 69 86 C6  -- 03DCC0
86 C6 20 FF 6E 86 C6 20 FF 6D 86 C6 20 FF 6C 86  -- 03DCD0
72 86 C6 20 FF 71 86 C6 20 FF 70 86 C6 20 FF 6F  -- 03DCE0
FF 75 86 C6 20 FF 74 86 C6 20 FF 73 86 C6 20 FF  -- 03DCF0
20 FF 78 86 C6 20 FF 77 86 C6 20 FF 76 86 C6 20  -- 03DD00
C6 00 FF 7B 86 C6 20 FF 7A 86 C6 20 FF 79 86 C6  -- 03DD10
86 C6 47 FF 7E 86 C6 49 FF 7D 86 C6 48 FF 7C 86  -- 03DD20
C6 20 82 46 C6 20 81 46 C6 20 80 46 C6 48 FF 7F  -- 03DD30
C6 20 86 46 C6 20 85 46 C6 20 84 46 C6 20 83 46  -- 03DD40
C6 20 8A 46 C6 20 89 46 C6 20 88 46 C6 20 87 46  -- 03DD50
C6 20 8E 46 C6 20 8D 46 C6 20 8C 46 C6 20 8B 46  -- 03DD60
C6 4D 92 46 C6 00 91 46 C6 20 90 46 C6 20 8F 46  -- 03DD70
C6 20 96 46 C6 20 95 46 C6 44 94 46 C6 49 93 46  -- 03DD80
C6 20 9A 46 C6 20 99 46 C6 20 98 46 C6 20 97 46  -- 03DD90

C6 20 9E 46 C6 20 9D 46 C6 20 9C 46 C6 20 9B 46  -- 03DDA0
C6 20 A2 46 C6 20 A1 46 C6 20 A0 46 C6 20 9F 46  -- 03DDB0
C6 20 A6 46 C6 20 A5 46 C6 20 A4 46 C6 20 A3 46  -- 03DDC0
C6 41 AA 46 C6 48 A9 46 C6 53 A8 46 C6 00 A7 46  -- 03DDD0
C6 20 AE 46 C6 20 AD 46 C6 20 AC 46 C6 44 AB 46  -- 03DDE0
C6 20 B2 46 C6 20 B1 46 C6 20 B0 46 C6 20 AF 46  -- 03DDF0
B6 46 C6 20 B5 46 C6 20 B4 46 C6 20 B3 46 01 FE  -- 03DE00
BA 46 C6 20 B9 46 C6 20 B8 46 C6 20 B7 46 C6 20  -- 03DE10
BE 46 C6 00 BD 46 C6 20 BC 46 C6 20 BB 46 C6 20  -- 03DE20
C2 46 C6 20 C1 46 C6 44 C0 46 C6 4E BF 46 C6 45  -- 03DE30
C6 46 C6 20 C5 46 C6 20 C4 46 C6 20 C3 46 C6 20  -- 03DE40
CA 46 C6 20 C9 46 C6 20 C8 46 C6 20 C7 46 C6 20  -- 03DE50
CE 46 C6 20 CD 46 C6 20 CC 46 C6 20 CB 46 C6 20  -- 03DE60
D2 46 C6 20 D1 46 C6 20 D0 46 C6 20 CF 46 C6 20  -- 03DE70
D6 46 C6 4F D5 46 C6 53 D4 46 C6 00 D3 46 C6 20  -- 03DE80
DA 46 C6 20 D9 46 C6 20 D8 46 C6 54 D7 46 C6 46  -- 03DE90
DE 46 C6 20 DD 46 C6 20 DC 46 C6 20 DB 46 C6 20  -- 03DEA0
E2 46 C6 20 E1 46 C6 20 E0 46 C6 20 DF 46 C6 20  -- 03DEB0
E6 46 C6 20 E5 46 C6 20 E4 46 C6 20 E3 46 C6 20  -- 03DEC0
3E C5 2E 00 E9 46 C6 20 E8 46 C6 20 E7 46 C6 20  -- 03DED0
FE 46 C7 01 B9 E9 00 01 B8 06 75 00 3D 83 D2 F4  -- 03DEE0
7D 05 FE 7E 83 01 83 E9 03 7E 05 FE 7E 83 00 00  -- 03DEF0
C1 EA 46 8B 76 7F 03 EA 7E 83 00 00 EA 46 C7 49  -- 03DF00
E6 C1 FE 76 8B 50 52 00 14 2D D2 8C C5 03 02 E0  -- 03DF10
1A 1E 8E 2E D2 18 3E 03 2E F8 8B 18 EA 46 6B 02  -- 03DF20
EA D9 9A 00 6A 00 5C ED 99 9A 05 D9 9B FE 03 D2  -- 03DF30
83 00 00 EA 46 C7 BC EB EA 46 FF 0E C4 83 00 14  -- 03DF40
D2 18 3E 03 2E F8 8B 18 EA 46 6B 2D 7F 03 EA 7E  -- 03DF50
8B D2 FC 0E DC 2E 9B 14 45 D9 9B D2 1A 1E 8E 2E  -- 03DF60
EA 46 FF EC 5D D9 9B 1F 16 FD 03 02 E7 C1 EA 7E  -- 03DF70
EA 7E 8B 27 7F 03 EA 7E 83 00 00 EA 46 C7 CD EB  -- 03DF80
04 06 DC 2E 9B EC 45 D9 9B 1F 16 FD 03 02 E7 C1  -- 03DF90
FF EC 5D D9 9B 1F 16 FD 03 02 E7 C1 EA 7E 8B D3  -- 03DFA0
```

```
ED F9 9A 00 5C ED 99 9A F8 46 D9 9B D3 EB EA 46 -- 03DFB0
9A 00 5C ED 99 9A F4 46 D9 9B 50 08 C4 83 00 5C -- 03DFC0
5C ED 99 9A F0 46 D9 9B 50 08 C4 83 00 5C ED F9 -- 03DFD0
99 9A EC 46 D9 9B 50 08 C4 83 00 5C ED F9 9A 00 -- 03DFE0
0E 36 FF 2E 50 08 C4 83 00 5C ED F9 9A 00 5C ED -- 03DFF0
C5 8B F8 8B 16 FE 46 6B D3 0C 36 FF 2E D3 01 FE -- 03E000
C4 83 00 5C 97 5E 9A 50 52 00 95 2D C7 03 5A 16 -- 03E010
D1 FC 76 8B 4E 7D 04 FC 7E 83 00 00 FC 46 C7 10 -- 03E020
D1 5C 3E C5 2E D1 6E 06 8E 2E D1 6C 36 03 2E E6 -- 03E030
10 36 FF 2E D3 12 36 FF 2E 2E 75 04 23 26 05 8B -- 03E040
F8 8B 16 FE 46 6B 05 C6 83 02 E6 C1 FC 76 8B D3 -- 03E050
97 5E 9A 50 52 00 9A 2D C6 03 C7 03 5A 16 C5 8B -- 03E060
FE 74 E9 FE 46 FF AC EB FC 46 FF 08 C4 83 00 5C -- 03E070
9A 35 FF D2 F8 3E C5 2E 50 FF 66 86 8D 16 00 6A -- 03E080
45 9A 35 FF D2 F8 3E C5 2E 08 C4 83 00 14 F5 9B -- 03E090
55 57 56 CB 5E 5F C9 9B C0 2B 02 C4 83 00 14 FA -- 03E0A0
F8 3E C5 2E 18 74 00 3D 83 D2 F4 3E C5 2E EC 8B -- 03E0B0
D2 F4 3E C5 2E 02 C4 83 00 14 F8 4D 9A 35 FF D2 -- 03E0C0
6A EC 8B 55 57 56 CB 5E 5F C9 C0 2B 00 00 05 C7 -- 03E0D0
83 00 64 28 52 9A 0A 76 FF 00 6A 00 6A 00 6A 00 -- 03E0E0
86 9A 00 6C 30 E4 00 CB 5E 5F C9 00 01 B8 0A C4 -- 03E0F0
76 BE 00 24 77 18 00 24 77 10 00 24 FF FA 00 3C -- 03E100
76 C0 00 24 3D 54 00 24 76 E1 00 24 3D 50 00 24 -- 03E110
76 A6 00 3C A5 4C 00 24 3C CE 00 6C 32 64 00 24 -- 03E120
75 4E 00 24 76 B4 00 3C 86 F6 00 3C 86 A2 00 24 -- 03E130

3D 14 00 24 74 C0 00 24 74 40 00 24 6A 40 00 24 -- 03E140
45 5C 00 24 4D 5C 00 24 3D 26 00 3C 6E 86 00 24 -- 03E150
76 FA 00 24 3D 48 00 3C 6E 84 00 24 76 A2 00 24 -- 03E160
45 5A 00 24 45 59 00 24 45 58 00 24 72 40 00 24 -- 03E170
E0 00 00 00 00 00 00 24 3C E8 00 24 76 F2 00 24 -- 03E180
3D 10 00 24 75 40 00 24 3C EC 00 24 76 F6 40 6F -- 03E190
75 50 00 24 76 E2 00 24 75 48 00 24 75 44 00 24 -- 03E1A0
75 4C 00 24 76 FE 00 3C 91 10 00 24 76 B8 00 24 -- 03E1B0
B3 26 00 3C 9D 4A 00 24 55 BC 00 24 3D 58 00 24 -- 03E1C0
00 24 58 20 00 24 3C F0 00 24 58 00 00 02 00 3C -- 03E1D0
76 EC 00 24 3D 1C 00 24 68 40 00 05 00 24 3D 00 -- 03E1E0
75 52 00 24 75 F2 00 24 60 40 00 24 58 40 00 24 -- 03E1F0
00 6C 30 E8 00 24 76 52 00 24 75 A2 00 24 01 FE -- 03E200
00 3C 91 14 00 6C 29 F4 00 3C 50 EE 00 6C 30 E2 -- 03E210
00 3C B4 2A 00 3C B3 16 00 24 77 8E 00 3C 90 C2 -- 03E220
00 3C 92 54 00 3C B3 2A 00 3C B3 14 00 3C 91 12 -- 03E230
00 24 57 BC 00 24 3D 4C 00 24 3D 4E 00 3C AE 54 -- 03E240
00 6C 29 F6 00 3C 50 E6 00 24 55 5C 00 24 57 C0 -- 03E250
00 00 00 00 00 24 57 BE 00 6C 1D E4 00 6C 1E 28 -- 03E260
47 AE 14 7B BF AE B8 51 EB 85 1E B8 40 00 00 00 -- 03E270
47 AE 14 7B 3F AE B8 51 EB 85 1E B8 BF 94 7A E1 -- 03E280
00 00 00 00 C0 14 00 00 00 00 00 00 3F 94 7A E1 -- 03E290
00 24 3D 56 40 14 00 00 00 00 00 C0 00 00 00 -- 03E2A0
00 00 00 00 00 24 76 E8 00 24 76 E4 00 24 3D 1E -- 03E2B0
00 3C 90 82 40 71 30 00 00 00 00 40 70 00 00 -- 03E2C0
00 24 76 A4 00 24 3D 20 00 24 3D 38 00 24 3D 28 -- 03E2D0
3F E0 00 00 00 00 00 40 44 00 00 00 00 00 00 -- 03E2E0
DD 9B 00 00 2C C8 57 56 00 24 3C E4 00 24 3C D3 -- 03E2F0
9B 08 C4 83 00 64 2E 6A 9A 00 5C ED 99 9A 12 46 -- 03E300
64 5A DC 9A 00 5C ED 99 9A 12 46 DD 9B E0 5E DD -- 03E310
DC 9B 05 D9 9B 1A 7E C5 D8 5E DD 9B 08 C4 83 00 -- 03E320
D8 4E DC 9B 05 D9 9B 1A 7E C5 F8 5E DD 9B E0 4E -- 03E330
DD 9B E0 4E DC 9B 05 D9 9B 1E 7E C5 F0 5E DD 9B -- 03E340
D4 5E D9 9B D8 4E DC 9B 05 D9 9B 1E 7E C5 E8 5E -- 03E350
```

```
1D D9 9B 22 7E C5 D4 66 D8 9B 05 D9 9B 0A 7E C5 -- 03E360
1D D9 9B 26 7E C5 E8 46 DC 9B 05 D9 9B 0E 7E C5 -- 03E370
1D D9 9B 2A 7E C5 F8 46 DC 9B 05 D9 9B 0A 7E C5 -- 03E380
1D D9 9B 2E 7E C5 F0 46 DC 9B 05 D9 9B 0E 7E C5 -- 03E390
7E C5 F8 46 DC 9B D4 66 D8 9B 05 D9 9B 0A 7E C5 -- 03E3A0
DC 9B E8 46 DC 9B 05 D9 9B 0E 7E C5 1D D9 9B 32 -- 03E3B0
C8 57 56 CB 5E 5F C9 9B 1D D9 9B 36 7E C5 F0 46 -- 03E3C0
1C D8 26 9B 05 D9 9B 0A 7E C5 12 76 C4 00 00 30 -- 03E3D0
05 D9 9B 0E 7E C5 16 76 C4 2F 75 00 5C ED 94 9A -- 03E3E0
D9 9B 12 7E C5 1B 75 00 5C ED 94 9A 1C D8 26 9B -- 03E3F0
C5 05 D9 9B 16 7E C5 1D D9 9B 22 7E C5 05 01 FE -- 03E400
5C ED 99 9A 1A 46 DD 9B 00 9E E9 1D D9 9B 26 7E -- 03E410
46 DD 9B F8 5E DD 9B 08 C4 83 00 64 2E 6A 9A 00 -- 03E420
DD 9B 08 C4 83 00 64 5A DC 9A 00 5C ED 99 9A 1A -- 03E430
9B 24 D8 26 9B 05 D9 9B 0A 7E C5 12 76 C4 F0 5E -- 03E440
24 D8 26 9B 05 D9 9B 0E 7E C5 16 76 C4 E8 5E DD -- 03E450
DC 5E D9 9B F8 4E DC 9B E8 46 DD 9B E0 5E DD 9B -- 03E460
9B 12 76 C4 D8 5E D9 9B F0 4E DC 9B E0 46 DD 9B -- 03E470
D9 9B 22 7E C5 04 D8 26 9B D8 66 D8 9B DC 46 D9 -- 03E480
16 76 C4 D0 5E DD 9B F8 4E DC 9B E0 46 DD 9B 1D -- 03E490
04 D8 26 9B D0 46 DC 9B F0 4E DC 9B E8 46 DD 9B -- 03E4A0
00 36 C8 57 56 CB 5E 5F C9 9B 1D D9 9B 26 7E C5 -- 03E4B0
99 9A 24 D8 26 9B 05 D9 9B 0E 7E C5 16 76 C4 00 -- 03E4C0
24 D8 26 9B 05 D9 9B 12 7E C5 0A 76 C4 00 5C ED -- 03E4D0

5E DD 9B 10 C4 83 00 1C FF 5C 9A 00 5C ED 99 9A -- 03E4E0
00 5C ED 94 9A FF 24 1E DC 2E 9B F8 46 DD 9B F8 -- 03E4F0
46 8D 16 F8 5E DD 9B E0 D9 9B F8 46 DD 9B 0B 74 -- 03E500
00 5C ED 99 9A F8 46 DD 9B 50 EC 46 8D 16 50 E8 -- 03E510
FF 20 76 FF 12 76 FF 14 76 FF 16 76 FF 18 76 FF -- 03E520
20 C4 83 00 2C D3 E9 9A 1A 76 FF 1C 76 FF 1E 76 -- 03E530
C5 00 5C ED 99 9A 25 D8 9B E8 46 D9 9B 16 7E C5 -- 03E540
5C 9A 00 5C ED 99 9A EC 66 D8 9B 05 D9 9B 12 7E -- 03E550
99 9A F0 46 DD 9B F0 5E DD 9B 10 C4 83 00 1C FF -- 03E560
C5 E4 5E D9 9B 08 C4 83 00 64 2E 6A 9A 00 5C ED -- 03E570
9B FF 2C 06 DD 2E 9B E0 5E D9 9B 05 D9 9B 24 7E -- 03E580
2C 06 DC 2E 9B E4 46 D9 9B CA 5E DD 9B E4 66 D8 -- 03E590
83 00 64 4E FE 9A 00 5C ED 99 9A CA 76 DC 9B FF -- 03E5A0
D2 4E DC 9B 05 D9 9B 28 7E C5 D2 5E DD 9B 08 C4 -- 03E5B0
00 5C ED 94 9A F0 5E DC 9B EE D9 9B DC 5E D9 9B -- 03E5C0
89 22 46 8B DC 5E D9 9B 05 D9 9B 28 7E C5 0A 75 -- 03E5D0
9B E0 D9 9B E0 46 D9 9B 0B 7E 00 DA 7E 83 DA 46 -- 03E5E0
76 00 5C ED 94 9A F0 5E DC 9B EE D9 9B E0 5E D9 -- 03E5F0
7D 00 DA 7E 83 DA 46 89 D8 F7 22 46 8B 08 01 FE -- 03E600
F8 46 DD 9B DC 5E D9 9B E0 D9 9B DC 46 D9 9B 0B -- 03E610
46 DD 9B 0B 74 00 5C ED 94 9A FF 24 1E DC 2E 9B -- 03E620
D8 9B 05 D9 9B 12 7E C5 F8 5E DD 9B E0 D9 9B F8 -- 03E630
DC 46 D8 9B 05 D9 9B 16 7E C5 EC 5E D9 9B E0 46 -- 03E640
2C 76 FF 2E 76 FF 30 76 FF 32 76 FF E8 5E D9 9B -- 03E650
FF 16 76 FF 18 76 FF 00 5C ED 99 9A F8 46 DD 9B -- 03E660
9A 50 EC 46 8D 16 50 E8 46 8D 16 12 76 FF 14 76 -- 03E670
34 C8 57 56 CB 5E 5F C9 9B 20 C4 83 00 2C D3 E9 -- 03E680
5C ED 94 9A FF 24 1E DC 2E 9B 12 46 DD 9B 00 00 -- 03E690
9B 1D D9 9B 1A 7E C5 05 D9 9B 0A 7E C5 18 75 00 -- 03E6A0
7E C5 0A 76 C4 00 B4 E9 1D D9 9B 1E 7E C5 EE D9 -- 03E6B0
C5 0E 76 C4 D8 5E D9 9B 0C D8 26 9B 05 D9 9B 0A -- 03E6C0
46 DD 9B DC 5E D9 9B 0C D8 26 9B 05 D9 9B 0E 7E -- 03E6D0
DD 9B 08 C4 83 00 64 2E 6A 9A 00 5C ED 99 9A 12 -- 03E6E0
00 64 5A DC 9A 00 5C ED 99 9A 12 46 DD 9B F8 5E -- 03E6F0
9B F8 4E DC 9B F8 46 DD 9B F0 5E DD 9B 08 C4 83 -- 03E700
```

EP 0 533 348 A2

```
9B E0 5E DD 9B F0 4E DC 9B F0 46 DD 9B E8 5E DD -- 03E710
9B DC 46 D9 9B CC 5E DD 9B E8 4E DC 9B D8 46 D9 -- 03E720
64 4E FE 9A 00 5C ED 99 9A CC 46 DC 9B E0 4E DC -- 03E730
D8 9B DC 46 D9 9B 1D D9 9B 1A 7E C5 08 C4 83 00 -- 03E740
76 C4 D4 5E D9 9B F0 4E DC 9B F8 4E DC 9B D8 66 -- 03E750
9B 1D D9 9B 1E 7E C5 34 D8 26 9B D4 46 D9 9B 1A -- 03E760
C8 57 56 CB 5E 5F C9 EC 8B 55 57 56 CB 5E 5F C9 -- 03E770
3E C5 2E FF 3C 36 C4 2E 00 00 FE 46 C7 00 00 24 -- 03E780
C5 FF 34 36 C4 2E 1C 03 26 02 4D 8B 1D 8B FF 38 -- 03E790
90 B8 06 76 C3 3B 04 03 26 02 55 8B 05 8B 0A 7E -- 03E7A0
D8 26 9B 05 D9 9B 0E 7E C5 16 76 C4 01 A2 E9 10 -- 03E7B0
76 C4 1E EB 01 FD 46 C6 06 75 00 5C ED 94 9A 1C -- 03E7C0
00 5C ED 94 9A 1C D8 26 9B 05 D9 9B 12 7E C5 1A -- 03E7D0
9B EE D9 9B 02 FD 46 C6 04 EB 03 FD 46 C6 06 75 -- 03E7E0
24 D8 26 9B 05 D9 9B 0E 7E C5 16 76 C4 DC 5E DD -- 03E7F0
12 7E C5 74 77 00 5C ED 94 9A DC 5E DC 9B 01 FE -- 03E800
5E D9 9B 05 D9 9B 0E 7E C5 F4 5E D9 9B 05 D9 9B -- 03E810
D9 9B 16 7E C5 F8 5E D9 9B 05 D9 9B 1A 7E C5 EC -- 03E820
7E C5 16 76 C4 EA 46 89 1E 46 8B F0 5E D9 9B 05 -- 03E830
C4 32 75 00 5C ED 94 9A 1C D8 26 9B 05 D9 9B 0E -- 03E840
5C ED 94 9A 1C D8 26 9B 05 D9 9B 12 7E C5 1A 76 -- 03E850
1A 7E C5 14 EB EA 46 89 D8 F7 1E 46 8B 0A 73 00 -- 03E860
5E D9 9B 05 D9 9B 12 7E C5 F4 5E D9 9B 05 D9 9B -- 03E870

D9 9B 0E 7E C5 16 76 C4 DC 5E DD 9B EE D9 9B F8 -- 03E880
57 76 00 5C ED 94 9A DC 5E DC 9B 24 D8 26 9B 05 -- 03E890
05 D9 9B 16 7E C5 F4 5E D9 9B 05 D9 9B 1A 7E C5 -- 03E8A0
7E C5 F8 5E D9 9B 05 D9 9B 12 7E C5 EC 5E D9 9B -- 03E8B0
C4 DC 5E DD 9B EE D9 9B F0 5E D9 9B 05 D9 9B 0E -- 03E8C0
DC 5E DC 9B 24 D8 26 9B 05 D9 9B 0E 7E C5 16 76 -- 03E8D0
EB EA 46 89 D8 F7 1E 46 8B 0A 76 00 5C ED 94 9A -- 03E8E0
83 E4 46 88 E4 2A FD 46 8A EA 46 89 1E 46 8B 06 -- 03E8F0
46 89 22 46 8B E8 46 89 20 46 8B 0E 7D 00 EA 7E -- 03E900
56 E8 46 89 22 46 8B E6 46 89 20 46 8B 0C EB E6 -- 03E910
C5 2E 50 E4 46 8D 16 35 FF 02 75 FF 0A 7E C5 57 -- 03E920
2E 0A 76 C4 5E 5F 00 5C FE EC 9A 35 FF FF 34 3E -- 03E930
0A 7E C5 02 54 8B 26 04 03 26 05 8B FF 34 3E C5 -- 03E940
C8 57 56 CB 5E 5F C9 9B FE 46 8B 02 55 89 05 89 -- 03E950
9A 2E 5E DC 9B EE D9 9B 00 00 CE 46 C7 00 00 3A -- 03E960
04 D1 46 C6 04 EB 05 D1 46 C6 06 74 00 5C ED 94 -- 03E970
26 02 4D 8B 1D 8B FF 38 3E C5 2E FF 3C 36 C4 2E -- 03E980
26 02 55 8B 05 8B 0A 7E C5 FF 40 36 C4 2E 1C 03 -- 03E990
9B EE D9 9B 01 1E E9 10 90 B8 06 76 C3 3B 04 03 -- 03E9A0
24 D8 26 9B 05 D9 9B 0E 7E C5 16 76 C4 C6 5E DD -- 03E9B0
D9 9B 12 7E C5 36 73 00 5C ED 94 9A C6 5E DC 9B -- 03E9C0
C5 DA 5E D9 9B 05 D9 9B 0E 7E C5 E2 5E D9 9B 05 -- 03E9D0
9B 05 D9 9B 16 7E C5 E6 5E D9 9B 05 D9 9B 1A 7E -- 03E9E0
EB EA 46 89 36 46 8B D8 46 89 38 46 8B DE 5E D9 -- 03E9F0
16 7E C5 E2 5E D9 9B 05 D9 9B 1A 7E C5 38 01 FE -- 03EA00
5E D9 9B 05 D9 9B 12 7E C5 DA 5E D9 9B 05 D9 9B -- 03EA10
D8 F7 38 46 8B DE 5E D9 9B 05 D9 9B 0E 7E C5 E6 -- 03EA20
E4 2A D1 46 8A EA 46 89 D8 F7 36 46 8B D8 46 89 -- 03EA30
8B D6 46 89 3A 46 8B 0E 7D 00 D8 7E 83 D2 46 88 -- 03EA40
3C 46 8B D4 46 89 3A 46 8B 0C EB D4 46 89 3C 46 -- 03EA50
1E 7E C5 EC 5E D9 9B 05 D9 9B 22 7E C5 D6 46 89 -- 03EA60
5E D9 9B 05 D9 9B 2A 7E C5 F0 5E D9 9B 05 D9 9B -- 03EA70
9B 2E 46 DD 9B F8 5E D9 9B 05 D9 9B 26 7E C5 F4 -- 03EA80
46 8D 16 35 FF 02 75 FF 0A 7E C5 57 56 FC 5E D9 -- 03EA90
5E 5F 00 5C FE EC 9A 35 FF FF 40 3E C5 2E 50 D2 -- 03EAA0
54 8B 26 04 03 26 05 8B FF 40 3E C5 2E 0A 76 C4 -- 03EAB0
```

282

```
5E  5F  C9  9B  CE  46  8B  02  55  89  05  89  0A  7E  C5  02  --  03EAC0
FF  20  7E  83  00  00  C2  46  C7  00  00  40  C8  57  56  CB  --  03EAD0
46  C7  05  EB  00  01  C0  46  C7  00  01  20  46  C7  0C  75  --  03EAE0
05  89  FF  38  3E  C5  2E  0C  56  8B  0A  46  8B  00  00  C0  --  03EAF0
57  56  05  89  FF  3C  3E  C5  2E  48  0E  46  8B  02  55  89  --  03EB00
00  8C  00  02  9A  0E  76  FF  00  6A  0A  76  FF  0C  76  FF  --  03EB10
00  02  20  46  C7  05  75  01  04  7D  80  10  7E  C5  5E  5F  --  03EB20
75  00  FA  7E  83  FA  46  89  E4  2A  48  45  8A  10  7E  C5  --  03EB30
8B  08  75  01  05  7D  80  10  7E  C5  FF  FF  FA  46  C7  05  --  03EB40
10  7E  C5  FC  46  89  FA  46  8B  FA  46  89  D8  F7  FA  46  --  03EB50
8A  10  7E  C5  F2  46  89  22  46  8B  F0  46  89  0A  45  8B  --  03EB60
9B  EE  D9  9B  F8  46  88  E4  2A  F9  46  88  E4  2A  30  45  --  03EB70
00  20  7E  83  F6  46  89  46  45  8B  10  7E  C5  EC  5E  D9  --  03EB80
00  F9  7E  80  09  75  02  20  7E  83  00  F9  46  C6  04  75  --  03EB90
46  8A  F9  46  88  40  E4  2A  F9  46  8A  02  59  E9  03  75  --  03EBA0
8B  08  75  00  F9  7E  80  F9  46  88  FF  FF  05  E4  2A  F9  --  03EBB0
46  8A  F0  8B  E4  2A  F9  46  8A  20  EB  F4  46  89  F0  46  --  03EBC0
8E  1C  7E  03  F8  8B  2A  C7  6B  FE  2B  F8  8B  E4  2A  F8  --  03EBD0
F9  7E  80  09  7D  00  20  7E  83  F4  46  89  05  8B  1E  5E  --  03EBE0
00  F9  7E  80  0E  75  02  20  7E  83  01  D2  E9  03  74  00  --  03EBF0
E4  46  8D  16  FC  46  89  D8  F7  FC  46  8B  08  75  01  FE  --  03EC00
50  EC  46  8D  16  50  EC  46  8D  16  50  E8  46  8D  16  50  --  03EC10

1A  76  FF  50  00  08  05  14  46  8B  16  76  FF  FA  76  FF  --  03EC20
00  04  05  14  46  8B  16  76  FF  50  00  08  05  18  46  8B  --  03EC30
76  FF  16  76  FF  50  00  04  05  18  46  8B  1A  76  FF  50  --  03EC40
C5  2A  C4  83  00  2C  D4  D5  9A  18  76  FF  1A  76  FF  14  --  03EC50
45  D9  9B  14  7E  C5  D8  5E  D9  9B  04  45  D9  9B  18  7E  --  03EC60
D0  5E  D9  9B  08  45  D9  9B  18  7E  C5  D4  5E  D9  9B  04  --  03EC70
00  01  FE  46  C7  CC  5E  D9  9B  08  45  D9  9B  14  7E  C5  --  03EC80
1E  E9  03  7F  FE  46  3B  40  F6  46  8B  FE  46  FF  03  EB  --  03EC90
47  47  FE  7E  8B  2C  7E  FE  46  3B  48  48  F6  46  8B  01  --  03ECA0
C8  5E  D9  9B  05  D9  9B  1A  5E  8E  18  7E  03  02  E7  C1  --  03ECB0
D9  9B  16  5E  8E  14  7E  03  02  E7  C1  47  47  FE  7E  8B  --  03ECC0
C1  47  47  F6  7E  2B  FE  7E  8B  30  EB  C4  5E  D9  9B  05  --  03ECD0
8B  C8  5E  D9  9B  05  D9  9B  1A  5E  8E  18  7E  03  02  E7  --  03ECE0
16  5E  8E  14  7E  03  02  E7  C1  47  47  F6  7E  2B  FE  7E  --  03ECF0
E0  46  8D  16  50  DC  46  8D  16  C4  5E  D9  9B  05  D9  9B  --  03ED00
8D  16  FA  76  FF  50  EC  46  8D  16  50  EC  46  8D  16  50  --  03ED10
46  8D  16  50  CC  46  8D  16  50  C8  46  8D  16  50  C4  46  --  03ED20
2C  D4  D5  9A  50  D8  46  8D  16  50  D4  46  8D  16  50  D0  --  03ED30
3C  74  00  C0  7E  83  0C  74  00  C0  7E  83  2A  C4  83  00  --  03ED40
16  FC  76  FF  F4  76  FF  F2  76  FF  36  75  00  F9  7E  80  --  03ED50
8D  16  50  E4  46  8D  16  50  E0  46  8D  16  50  DC  46  8D  --  03ED60
1A  C4  83  00  2C  D7  95  9A  50  0A  46  8D  16  50  E8  46  --  03ED70
E0  46  D9  9B  77  EB  C2  46  8B  05  74  C0  0B  C2  46  89  --  03ED80
D0  46  D9  9B  E4  5E  D9  9B  DC  46  D9  9B  E8  5E  D9  9B  --  03ED90
C8  46  D9  9B  D4  5E  D9  9B  CC  46  D9  9B  D8  5E  D9  9B  --  03EDA0
80  FE  D3  E9  CC  5E  D9  9B  C4  46  D9  9B  D0  5E  D9  9B  --  03EDB0
8B  E4  2A  F9  46  8A  39  EB  C2  46  8B  05  75  00  F9  7E  --  03EDC0
03  F8  8B  2A  C6  6B  F1  2B  F0  8B  E4  2A  F8  46  8A  C8  --  03EDD0
5E  D9  9B  26  45  D8  9B  EC  46  D9  9B  1E  5E  8E  1C  7E  --  03EDE0
FD  B0  E9  03  74  00  F9  7E  80  F2  46  89  F4  46  8B  EC  --  03EDF0
00  00  64  C8  57  56  CB  5E  5F  C9  9B  C2  46  8B  01  FE  --  03EE00
00  01  18  46  C7  0C  75  FF  18  7E  83  00  00  AC  46  C7  --  03EE10
8B  0A  46  8B  00  00  FE  46  C7  05  EB  00  01  FE  46  C7  --  03EE20
48  0E  46  8B  02  55  89  05  89  FF  38  3E  C5  2E  0C  56  --  03EE30
6A  0A  76  FF  0C  76  FF  57  56  05  89  FF  3C  3E  C5  2E  --  03EE40
7D  80  10  7E  C5  5E  5F  00  8C  00  02  9A  0E  76  FF  00  --  03EE50
7E  C5  FF  FF  FA  46  C7  00  02  18  46  C7  05  75  01  04  --  03EE60
```

```
8B FA 46 89 D8 F7 FA 46 8B 08 75 01 05 7D 80 10 -- 03EE70
46 8B F2 46 89 0A 45 8B 10 7E C5 FC 46 89 FA 46 -- 03EE80
2A F9 46 88 E4 2A 30 45 8A 10 7E C5 F4 46 89 1A -- 03EE90
C5 EE 5E D9 9B 4A 45 D9 9B 10 7E C5 F8 46 88 E4 -- 03EEA0
D9 9B EE 46 D9 9B EA 5E D9 9B 46 45 D9 9B 10 7E -- 03EEB0
10 7E C5 CA 5E D9 9B 52 45 D9 9B 10 7E C5 E6 5E -- 03EEC0
CA 46 D8 9B EA 46 D9 9B CE 5E D9 9B 4E 45 D9 9B -- 03EED0
DE 5E D9 9B CE 46 D8 9B EE 46 D9 9B E2 5E D9 9B -- 03EEE0
D6 5E D9 9B DE 46 D9 9B DA 5E D9 9B EA 46 D9 9B -- 03EEF0
7E C5 32 75 FF 10 7E C5 D2 5E D9 9B E2 46 D9 9B -- 03EF00
36 DC 2E 9B 04 C4 83 00 64 49 4E 9A 08 75 FF 10 -- 03EF10
00 18 7E 83 B2 5E DD 9B FF 4C 0E DC 2E 9B FF 44 -- 03EF20
00 F9 7E 80 09 75 02 18 7E 83 00 F9 46 C6 04 75 -- 03EF30
46 89 F2 46 8B 08 75 00 F9 7E 80 02 FD E9 03 75 -- 03EF40
8B E4 2A F8 46 8A F0 8B E4 2A F9 46 8A 20 EB F6 -- 03EF50
05 8B 16 5E 8E 14 7E 03 F8 8B 2E C7 6B FE 2B F8 -- 03EF60
E9 03 74 00 F9 7E 80 09 7D 00 18 7E 83 F6 46 89 -- 03EF70
46 8B 10 75 00 F9 7E 80 16 75 02 18 7E 83 01 65 -- 03EF80
8D 16 FC 46 89 D8 F7 FC 46 8B FA 46 89 D8 F7 FA -- 03EF90
46 8D 16 50 DA 46 8D 16 50 D6 46 8D 16 50 D2 46 -- 03EFA0
CA 46 8D 16 50 E6 46 8D 16 50 E2 46 8D 16 50 DE -- 03EFB0

16 00 5C ED 99 9A B2 46 DD 9B 50 CE 46 8D 16 50 -- 03EFC0
C4 83 00 2C D3 14 9A 50 EE 46 8D 16 50 EA 46 8D -- 03EFD0
00 E5 E9 03 75 00 FE 7E 83 12 74 00 FE 7E 83 30 -- 03EFE0
FF F6 76 FF F4 76 FF 00 DC E9 03 74 00 F9 7E 80 -- 03EFF0
8D 16 50 EE 46 8D 16 50 EA 46 8D 16 FC 76 01 FE -- 03F000
D7 95 9A 50 0A 46 8D 16 50 E6 46 8D 16 50 E2 46 -- 03F010
E9 AC 46 8B 06 74 C0 0B AC 46 89 1A C4 83 00 2C -- 03F020
50 DA 46 8D 16 FC 76 FF F6 76 FF F4 76 FF 02 15 -- 03F030
16 50 EE 46 8D 16 50 EA 46 8D 16 50 DE 46 8D 16 -- 03F040
0B AC 46 89 1A C4 83 00 2C D7 95 9A 50 0A 46 8D -- 03F050
FF F6 76 FF F4 76 FF 01 DE E9 AC 46 8B 06 74 C0 -- 03F060
DA 46 8D 16 50 D6 46 8D 16 50 D2 46 8D 16 FC 76 -- 03F070
00 2C D7 95 9A 50 0A 46 8D 16 50 DE 46 8D 16 50 -- 03F080
01 A7 E9 AC 46 8B 06 74 C0 0B AC 46 89 1A C4 83 -- 03F090
8D 16 50 E2 46 8D 16 FC 76 FF F6 76 FF F4 76 FF -- 03F0A0
46 8D 16 50 D6 46 8D 16 50 D2 46 8D 16 50 E6 46 -- 03F0B0
74 C0 0B AC 46 89 1A C4 83 00 2C D7 95 9A 50 0A -- 03F0C0
F9 7E 80 F4 46 89 F6 46 8B 01 70 E9 AC 46 8B 06 -- 03F0D0
C8 8B E4 2A F9 46 8A 01 5E E9 AC 46 8B 06 75 00 -- 03F0E0
7E 03 F8 8B 2E C6 6B F1 2B F0 8B E4 2A F8 46 8A -- 03F0F0
C6 5E D9 9B 26 45 D8 9B EE 46 D9 9B 16 5E 8E 14 -- 03F100
F1 2B F0 8B E4 2A F8 46 8A C8 8B E4 2A F9 46 8A -- 03F110
9B EA 46 D9 9B 16 5E 8E 14 7E 03 F8 8B 2E C6 6B -- 03F120
9B BE 5E D9 9B EE 46 D9 9B C2 5E D9 9B 2A 45 D8 -- 03F130
EE 46 8D 16 50 EA 46 8D 16 BA 5E D9 9B EA 46 D9 -- 03F140
16 50 BA 46 8D 16 00 5C ED 99 9A B2 46 DD 9B 50 -- 03F150
E9 9A 50 C6 46 8D 16 50 C2 46 8D 16 50 BE 46 8D -- 03F160
F8 46 8A C8 8B E4 2A F9 46 8A 20 C4 83 00 2C D3 -- 03F170
5E 8E 14 7E 03 F8 8B 2E C6 6B F1 2B F0 8B E4 2A -- 03F180
F9 46 8A AE 5E D9 9B 26 65 D8 9B CE 46 D9 9B 16 -- 03F190
2E C6 6B F1 2B F0 8B E4 2A F8 46 8A C8 8B E4 2A -- 03F1A0
26 65 D8 9B AE 46 D9 9B 16 5E 8E 14 7E 03 F8 8B -- 03F1B0
E4 2A F8 46 8A C8 8B E4 2A F9 46 8A CE 5E D9 9B -- 03F1C0
9B 16 5E 8E 14 7E 03 F8 8B 2E C6 6B F1 2B F0 8B -- 03F1D0
E4 2A F9 46 8A AE 5E D9 9B 2A 65 D8 9B CA 46 D9 -- 03F1E0
F8 8B 2E C6 6B F1 2B F0 8B E4 2A F8 46 8A C8 8B -- 03F1F0
2A 65 D8 9B AE 46 D9 9B 16 5E 8E 14 7E 03 01 FE -- 03F200
D9 9B A4 5E DD 9B EE D9 9B F9 4E FE CA 5E D9 9B -- 03F210
```

284

```
EE D9 9B 19 76 00 5C ED 94 9A A4 5E DC 9B CE 46 -- 03F220
5C ED 94 9A 9C 5E DC 9B CA 46 D9 9B 9C 5E DD 9B -- 03F230
57 56 CB 5E 5F C9 9B AC 46 8B FD 03 E9 03 76 00 -- 03F240
C7 0C 75 FF 18 7E 83 00 00 BE 46 C7 00 00 54 C8 -- 03F250
00 00 BC 46 C7 05 EB 00 01 BC 46 C7 00 01 18 46 -- 03F260
02 55 89 05 89 FF 38 3E C5 2E 0C 56 8B 0A 46 8B -- 03F270
0C 76 FF 57 56 05 89 FF 3C 3E C5 2E 48 0E 46 8B -- 03F280
C7 5E 5F 00 8C 00 02 9A 0E 76 FF 00 6A 0A 76 FF -- 03F290
FC 46 8B 08 75 01 05 7D 80 10 7E C5 00 01 FC 46 -- 03F2A0
10 7E C5 FE 46 89 D8 F7 FC 46 8B FC 46 89 D8 F7 -- 03F2B0
8A 10 7E C5 F6 46 89 1A 46 8B F4 46 89 0A 45 8B -- 03F2C0
9B 10 7E C5 FA 46 88 E4 2A FB 46 88 E4 2A 30 45 -- 03F2D0
10 7E C5 F0 5E D9 9B FF 54 0E DC 2E 9B 52 45 D9 -- 03F2E0
7E C5 EC 5E D9 9B FF 54 0E DC 2E 9B 4E 45 D9 9B -- 03F2F0
83 00 64 49 4E 9A 08 75 FF 10 7E C5 32 75 FF 10 -- 03F300
FF 44 36 DC 2E 9B C8 46 D9 9B C8 5E D9 9B 04 C4 -- 03F310
45 D9 9B 10 7E C5 C0 5E DD 9B FF 4C 0E DC 2E 9B -- 03F320
E8 5E D9 9B 46 45 D9 9B 10 7E C5 E4 5E D9 9B 4A -- 03F330
09 75 02 18 7E 83 00 FB 46 C6 04 75 00 18 7E 83 -- 03F340
8B 08 75 00 FB 7E 80 02 1D E9 03 75 00 FB 7E 80 -- 03F350

46 8A F0 8B E4 2A FB 46 8A 20 EB F8 46 89 F4 46 -- 03F360
8E 14 7E 03 F8 8B 2E C7 6B FE 2B F8 8B E4 2A FA -- 03F370
FB 7E 80 09 7D 00 18 7E 83 F8 46 89 05 8B 16 5E -- 03F380
00 FB 7E 80 16 75 02 18 7E 83 01 60 E9 03 74 00 -- 03F390
89 D8 F7 FE 46 8B FC 46 89 D8 F7 FC 46 8B 10 75 -- 03F3A0
C0 46 DD 9B 50 D0 46 8D 16 50 CC 46 8D 16 FE 46 -- 03F3B0
9A 50 F0 46 8D 16 50 EC 46 8D 16 00 5C ED 99 9A -- 03F3C0
9B D0 66 D8 9B E4 46 D9 9B 18 C4 83 00 2C D6 A4 -- 03F3D0
9B DC 5E D9 9B D0 46 D8 9B E4 46 D9 9B E0 5E D9 -- 03F3E0
46 D9 9B 0B 76 00 5C ED 94 9A C0 5E DC 9B EE D9 -- 03F3F0
D8 9B E8 46 D9 9B CC 5E D9 9B E0 D9 9B CC 01 FE -- 03F400
D9 9B CC 66 D8 9B E8 46 D9 9B D8 5E D9 9B CC 46 -- 03F410
B5 E9 03 75 00 BC 7E 83 12 74 00 BC 7E 83 D4 5E -- 03F420
F8 76 FF F6 76 FF 00 AC E9 03 74 00 FB 7E 80 00 -- 03F430
8D 16 00 5C ED 99 9A C0 46 DD 9B FF 6A FE 76 FF -- 03F440
46 8D 16 50 E8 46 8D 16 50 F0 46 8D 16 50 EC 46 -- 03F450
D8 46 8D 16 50 DC 46 8D 16 50 D4 46 8D 16 50 E4 -- 03F460
00 2C D9 73 9A 50 0A 46 8D 16 50 E0 46 8D 16 50 -- 03F470
00 EB E9 BE 46 8B 06 74 C0 0B BE 46 89 34 C4 83 -- 03F480
9A C0 46 DD 9B 01 6A FC 76 FF F8 76 FF F6 76 FF -- 03F490
8D 16 50 F0 46 8D 16 50 EC 46 8D 16 00 5C ED 99 -- 03F4A0
46 8D 16 50 D4 46 8D 16 50 E4 46 8D 16 50 E8 46 -- 03F4B0
0A 46 8D 16 50 E0 46 8D 16 50 D8 46 8D 16 50 DC -- 03F4C0
06 74 C0 0B BE 46 89 34 C4 83 00 2C D9 73 9A 50 -- 03F4D0
E9 BE 46 8B 06 75 00 FB 7E 80 00 95 E9 BE 46 8B -- 03F4E0
8A C8 8B E4 2A FB 46 8A F6 46 89 F8 46 8B 00 89 -- 03F4F0
14 7E 03 F8 8B 2E C6 6B F1 2B F0 8B E4 2A FA 46 -- 03F500
8A F0 5E D9 9B 26 65 D8 9B F0 46 D9 9B 16 5E 8E -- 03F510
6B F1 2B F0 8B E4 2A FA 46 8A C8 8B E4 2A FB 46 -- 03F520
D8 9B EC 46 D9 9B 16 5E 8E 14 7E 03 F8 8B 2E C6 -- 03F530
B4 5E DD 9B EE D9 9B FB 4E FE EC 5E D9 9B 2A 65 -- 03F540
9B 19 76 00 5C ED 94 9A B4 5E DC 9B F0 46 D9 9B -- 03F550
94 9A AC 5E DC 9B EC 46 D9 9B AC 5E DD 9B EE D9 -- 03F560
CB 5E 5F C9 9B BE 46 8B FD E3 E9 03 76 00 5C ED -- 03F570
75 FF 18 7E 83 00 00 FC 46 C7 00 01 16 C8 57 56 -- 03F580
FE 46 C7 05 EB 00 01 FE 46 C7 00 01 18 46 C7 0C -- 03F590
89 05 89 FF 38 3E C5 2E 0C 56 8B 0A 46 8B 00 00 -- 03F5A0
FF 57 56 05 89 FF 3C 3E C5 2E 48 0E 46 8B 02 55 -- 03F5B0
5F 00 8C 00 02 9A 0E 76 FF 00 6A 0A 76 FF 0C 76 -- 03F5C0
```

285

```
C7 00 02 18 46 C7 05 75 01 04 7D 80 10 7E C5 5E -- 03F5D0
F8 46 8B 08 75 01 05 7D 80 10 7E C5 FF FF F8 46 -- 03F5E0
45 8B 10 7E C5 FA 46 89 F8 46 8B F8 46 89 D8 F7 -- 03F5F0
8B 10 46 8B EA 46 89 1A 46 8B E8 46 89 0A 01 FE -- 03F600
10 46 8B FF 10 96 89 FF 0E 86 89 00 56 05 12 56 -- 03F610
7E C5 FF 0C 96 89 FF 0A 86 89 00 5A 05 12 56 8B -- 03F620
46 45 D9 9B 10 7E C5 E4 5E D9 9B 4A 45 D9 9B 10 -- 03F630
FF 66 9E D9 9B 52 45 D9 9B 10 7E C5 E0 5E D9 9B -- 03F640
FF 10 7E C5 FF 6A 9E D9 9B 4E 45 D9 9B 10 7E C5 -- 03F650
04 C4 83 00 64 49 4E 9A 08 75 FF 10 7E C5 32 75 -- 03F660
1E 9E DD 9B FF 4C 0E DC 2E 9B FF 44 36 DC 2E 9B -- 03F670
46 88 E4 2A EF 46 88 E4 2A 30 45 8A 10 7E C5 FF -- 03F680
DD 2E 9B 82 5E D9 9B FF 7E 96 D9 9B EE D9 9B EE -- 03F690
46 C7 FF 2E 9E DD 9B FF 5C 36 DC 2E 9B FF 4C 06 -- 03F6A0
7E 8B 5B 7D 04 F6 7E 83 F6 46 FF 03 EB 00 00 F6 -- 03F6B0
F6 7E 8B E4 2A 05 8A FF 10 9E 8E FF 0E BE 03 F6 -- 03F6C0
FD 03 E7 D1 F6 7E 8B D6 45 89 1F 16 FD 03 E7 D1 -- 03F6D0
03 E7 D1 F6 7E 8B 0E 75 00 02 3D D6 45 8B 1F 16 -- 03F6E0
16 FD 03 E7 D1 F6 7E 8B FF FF D6 45 C7 1F 16 FD -- 03F6F0

FD 03 E7 D1 F6 7E 8B AC 75 00 03 3D D6 45 8B 1F -- 03F700
C6 04 75 00 18 7E 83 9C EB 00 00 D6 45 C7 1F 16 -- 03F710
E9 03 75 00 EF 7E 80 09 75 02 18 7E 83 00 EF 46 -- 03F720
20 EB EC 46 89 E8 46 8B 08 75 00 EF 7E 80 0A 72 -- 03F730
FE 2B F8 8B E4 2A EE 46 8A F0 8B E4 2A EF 46 8A -- 03F740
EC 46 89 05 8B 16 5E 8E 14 7E 03 F8 8B 2E C7 6B -- 03F750
83 0A 08 E9 03 74 00 EF 7E 80 09 7D 00 18 7E 83 -- 03F760
D8 F7 F8 46 8B 10 75 00 EF 7E 80 16 75 02 18 7E -- 03F770
9B E4 46 D9 9B FA 46 89 D8 F7 FA 46 8B F8 46 89 -- 03F780
50 A6 46 8D 16 96 5E D9 9B E0 46 D9 9B B6 5E D9 -- 03F790
16 50 CE 46 8D 16 50 AE 46 8D 16 50 C6 46 8D 16 -- 03F7A0
16 50 FF 66 86 8D 16 50 BE 46 8D 16 50 9E 46 8D -- 03F7B0
16 00 5C ED 99 9A FF 1E 86 DD 9B 50 FF 6A 86 8D -- 03F7C0
C4 83 00 2C D3 14 9A 50 E4 46 8D 16 50 E0 46 8D -- 03F7D0
FF 26 9E DD 9B FF 2E 86 DC 9B FF 1E 86 DD 9B 30 -- 03F7E0
03 7C 04 F6 7E 83 F6 46 FF 03 EB 00 00 F6 46 C7 -- 03F7F0
7E 01 F6 7E 83 F0 46 89 F6 46 8B 07 BD E9 01 FE -- 03F800
01 25 40 F6 46 8B F0 46 89 F6 46 2B 00 05 B8 09 -- 03F810
9E 8E FF 0A BE 03 03 E7 C1 F0 7E 8B F4 46 89 00 -- 03F820
03 03 E7 C1 F0 7E 8B 92 5E D9 9B 05 D9 9B FF 0C -- 03F830
8B 8E 5E D9 9B 04 45 D9 9B FF 0C 9E 8E FF 0A BE -- 03F840
DD 9B DE 46 89 D6 45 8B 1F 16 FD 03 E7 D1 F0 7E -- 03F850
F6 46 8B FF 26 9E DD 9B FF 2E A6 DC 9B FF 26 86 -- 03F860
9B 1F 16 FD 03 02 E7 C1 F2 7E 8B F2 46 89 E0 D1 -- 03F870
FD 03 02 E7 C1 F2 7E 8B FF 7A 9E D9 9B B6 45 D9 -- 03F880
C1 47 F2 7E 8B FF 76 9E D9 9B 96 45 D9 9B 1F 16 -- 03F890
8B B6 5D D9 9B FF 7A 86 D9 9B 1F 16 FD 03 02 E7 -- 03F8A0
9B FF 76 86 D9 9B 1F 16 FD 03 02 E7 C1 47 F2 7E -- 03F8B0
ED 94 9A FF 24 1E DC 2E 9B 92 46 D9 9B 96 5D D9 -- 03F8C0
24 1E DC 2E 9B 8E 46 D9 9B FF 22 E9 03 77 00 5C -- 03F8D0
7D 00 DE 7E 83 FF 0E E9 03 77 00 5C ED 94 9A FF -- 03F8E0
46 D9 9B 92 5E D9 9B 82 66 D8 9B 92 46 D9 9B 2C -- 03F8F0
D9 9B 92 46 D9 9B 8E 5E D9 9B FF 7E A6 D8 9B 8E -- 03F900
DE 7E 83 02 0F E9 86 5E D9 9B 8E 46 D9 9B 8A 5E -- 03F910
D9 9B 82 46 D8 9B 92 46 D9 9B 00 DA E9 03 7F 00 -- 03F920
9B 8E 5E D9 9B FF 7E 86 D8 9B 8E 46 D9 9B 92 5E -- 03F930
46 D9 9B FF 62 9E D9 9B 8E 76 D8 9B FF 7E 86 D9 -- 03F940
9B FF 62 86 D9 9B FF 5E 9E D9 9B 92 76 D8 9B 82 -- 03F950
9B FF 2C 06 DD 2E 9B FF 1A 9E D9 9B FF 62 8E D8 -- 03F960
99 9A FF 16 86 D9 9B FF 16 9E D9 9B FF 1A A6 D8 -- 03F970
```

286

```
FF  02  9E  DD  9B  08  C4  83  00  64  4E  FE  9A  00  5C  ED  --  03F980
D9  9B  FF  12  9E  D9  9B  FF  02  8E  DC  9B  92  46  D9  9B  --  03F990
FF  5E  86  D9  9B  8A  5E  D9  9B  82  66  D8  9B  FF  12  86  --  03F9A0
FF  2C  06  DD  2E  9B  FF  1A  9E  D9  9B  FF  5E  8E  D8  9B  --  03F9B0
9A  FF  16  86  D9  9B  FF  16  9E  D9  9B  FF  1A  A6  D8  9B  --  03F9C0
02  9E  DD  9B  08  C4  83  00  64  4E  FE  9A  00  5C  ED  99  --  03F9D0
9B  FF  12  9E  D9  9B  FF  02  8E  DC  9B  8E  46  D9  9B  FF  --  03F9E0
01  2C  E9  86  5E  D9  9B  FF  7E  A6  D8  9B  FF  12  86  D9  --  03F9F0
9B  FF  62  9E  D9  9B  8E  76  D8  9B  92  46  D9  9B  01  FE  --  03FA00
62  86  D9  9B  FF  5E  9E  D9  9B  92  76  D8  9B  8E  46  D9  --  03FA10
DC  9B  E8  D9  9B  FF  02  9E  DD  9B  FF  62  8E  D8  9B  FF  --  03FA20
08  C4  83  00  64  4E  FE  9A  00  5C  ED  99  9A  FF  02  86  --  03FA30
9B  FF  5E  8E  D8  9B  FF  5E  86  D9  9B  FF  62  9E  D9  9B  --  03FA40
5C  ED  99  9A  FF  02  86  DC  9B  E8  D9  9B  FF  02  9E  DD  --  03FA50
D9  9B  FF  5E  9E  D9  9B  08  C4  83  00  64  4E  FE  9A  00  --  03FA60
FE  EA  86  DC  9B  FF  62  86  D9  9B  FE  EA  9E  DD  9B  E8  --  03FA70
86  D9  9B  FE  FA  9E  DD  9B  E8  D9  9B  FE  F2  9E  DD  9B  --  03FA80
5C  ED  99  9A  FE  F2  B6  DC  9B  FE  FA  A6  DC  9B  FF  62  --  03FA90

D9  9B  FF  02  9E  DD  9B  08  C4  83  00  64  4E  FE  9A  00  --  03FAA0
8E  46  D9  9B  FF  16  9E  D9  9B  FF  02  8E  DC  9B  82  46  --  03FAB0
D9  9B  86  5E  D9  9B  FF  7E  A6  D8  9B  FF  16  86  D8  9B  --  03FAC0
FE  EA  86  DC  9B  FF  5E  86  D9  9B  FE  EA  9E  DD  9B  E8  --  03FAD0
86  D9  9B  FE  FA  9E  DD  9B  E8  D9  9B  FE  F2  9E  DD  9B  --  03FAE0
5C  ED  99  9A  FE  F2  B6  DC  9B  FE  FA  A6  DC  9B  FF  5E  --  03FAF0
D9  9B  FF  02  9E  DD  9B  08  C4  83  00  64  4E  FE  9A  00  --  03FB00
46  D9  9B  FF  16  9E  D9  9B  FF  02  8E  DC  9B  FF  7E  86  --  03FB10
D9  9B  8A  5E  D9  9B  82  66  D8  9B  FF  16  86  D8  9B  92  --  03FB20
9A  FF  02  9E  DC  9B  8A  46  D9  9B  FF  02  9E  DD  9B  EE  --  03FB30
FA  9E  DD  9B  EE  D9  9B  FC  B2  E9  03  77  00  5C  ED  94  --  03FB40
77  00  5C  ED  94  9A  FE  FA  9E  DC  9B  86  46  D9  9B  FE  --  03FB50
9B  FF  7A  86  D9  9B  6B  75  01  F4  7E  83  FC  97  E9  03  --  03FB60
A6  D8  9B  FF  76  86  D9  9B  FF  72  9E  D9  9B  82  66  D8  --  03FB70
86  8D  16  50  FF  46  86  8D  16  FF  6E  9E  D9  9B  FF  7E  --  03FB80
16  50  FF  52  86  8D  16  50  FF  4E  86  8D  16  50  FF  4A  --  03FB90
50  86  46  8D  16  50  FF  5A  86  8D  16  50  FF  56  86  8D  --  03FBA0
16  00  5C  ED  99  9A  FF  26  86  DD  9B  50  8A  46  8D  16  --  03FBB0
00  2C  D3  14  9A  50  FF  7A  86  8D  16  50  FF  76  86  8D  --  03FBC0
9B  FF  7E  A6  D8  9B  FF  7A  86  D9  9B  69  EB  30  C4  83  --  03FBD0
9E  D9  9B  82  66  D8  9B  FF  76  86  D9  9B  FF  72  9E  D9  --  03FBE0
8D  16  50  FF  4A  86  8D  16  50  FF  46  86  8D  16  FF  6E  --  03FBF0
56  86  8D  16  50  FF  52  86  8D  16  50  FF  4E  86  01  FE  --  03FC00
46  8D  16  50  8A  46  8D  16  50  FF  5A  86  8D  16  50  FF  --  03FC10
76  86  8D  16  00  5C  ED  99  9A  FF  26  86  DD  9B  50  86  --  03FC20
30  C4  83  00  2C  D3  14  9A  50  FF  7A  86  8D  16  50  FF  --  03FC30
1E  86  DD  9B  50  FF  62  86  8D  16  50  FF  5E  86  8D  16  --  03FC40
50  92  46  8D  16  50  8E  46  8D  16  00  5C  ED  99  9A  FF  --  03FC50
D9  9B  0D  7E  01  F6  7E  83  18  C4  83  00  2C  D6  A4  9A  --  03FC60
74  01  F6  7E  83  FF  62  9E  D9  9B  E0  D9  9B  FF  62  86  --  03FC70
9B  E0  D9  9B  FF  5E  86  D9  9B  0D  75  02  F6  7E  83  06  --  03FC80
5C  ED  94  9A  FF  1E  9E  DC  9B  EE  D9  9B  FF  5E  9E  D9  --  03FC90
FF  5E  9E  D9  9B  E0  D9  9B  FF  5E  86  D9  9B  0D  76  00  --  03FCA0
4A  86  8D  16  50  FF  46  86  8D  16  43  7E  00  DE  7E  83  --  03FCB0
76  86  8D  16  00  5C  ED  99  9A  FF  26  86  DD  9B  50  FF  --  03FCC0
8D  16  50  FF  6E  86  8D  16  50  FF  7A  86  8D  16  50  FF  --  03FCD0
62  86  D9  9B  20  C4  83  00  2C  D3  E9  9A  50  FF  72  86  --  03FCE0
E9  03  75  00  DE  7E  83  FF  62  9E  D9  9B  E0  D9  9B  FF  --  03FCF0
42  9E  D9  9B  FF  62  A6  D8  9B  FF  4A  86  D9  9B  02  26  --  03FD00
FF  3E  9E  D9  9B  FF  5E  A6  D8  9B  FF  46  86  D9  9B  FF  --  03FD10
83  1A  77  00  5C  ED  94  9A  FF  1E  9E  DC  9B  EE  D9  9B  --  03FD20
```

```
9B FF 42 9E D9 9B FF 52 86 D9 9B 14 75 01 F4 7E -- 03FD30
1E 9E DC 9B EE D9 9B FF 3E 9E D9 9B FF 4E 86 D9 -- 03FD40
D9 9B 14 74 01 F4 7E 83 1A 72 00 5C ED 94 9A FF -- 03FD50
9E D9 9B FF 4E 86 D9 9B FF 42 9E D9 9B FF 52 86 -- 03FD60
5C ED 94 9A FF 4E 9E D8 9B FF 56 86 D9 9B FF 3E -- 03FD70
ED 94 9A FF 56 9E D8 9B FF 3E 86 D9 9B 4E 73 00 -- 03FD80
D9 9B FF 3E 9E D9 9B FF 56 86 D9 9B 16 73 00 5C -- 03FD90
9B FF 3E 86 D9 9B 73 EB FF 42 9E D9 9B FF 5A 86 -- 03FDA0
FF 4E 86 D9 9B 62 76 00 5C ED 94 9A FF 4E 9E D8 -- 03FDB0
EB FF 42 9E D9 9B FF 52 86 D9 9B FF 3E 9E D9 9B -- 03FDC0
00 5C ED 94 9A FF 4E 9E D8 9B FF 3E 86 D9 9B 4C -- 03FDD0
52 86 D9 9B FF 3E 9E D9 9B FF 4E 86 D9 9B 16 73 -- 03FDE0
9E D8 9B FF 3E 86 D9 9B 25 EB FF 42 9E D9 9B FF -- 03FDF0
FF 56 86 D9 9B 14 76 00 5C ED 94 9A FF 56 01 FE -- 03FE00
9B FF 42 9E D9 9B FF 52 86 D9 9B FF 3E 9E D9 9B -- 03FE10
70 74 00 5C ED 94 9A FF 42 9E D8 9B FF 5A 86 D9 -- 03FE20
00 EF 7E 80 64 74 00 FE 7E 83 0C 74 00 FE 7E 83 -- 03FE30

DD 9B DE 76 FF FA 76 FF EC 76 FF EA 76 FF 5E 75 -- 03FE40
46 8D 16 50 8E 46 8D 16 00 5C ED 99 9A FF 1E 86 -- 03FE50
8D 16 50 FF 4A 86 8D 16 50 FF 46 86 8D 16 50 92 -- 03FE60
50 FF 56 86 8D 16 50 FF 42 86 8D 16 50 FF 3E 86 -- 03FE70
00 2C D9 73 9A 50 0A 46 8D 16 50 FF 5A 86 8D 16 -- 03FE80
03 0F E9 FC 46 8B 06 74 C0 0B FC 46 89 34 C4 83 -- 03FE90
75 00 5C ED 94 9A FF 52 9E D8 9B FF 42 86 D9 9B -- 03FEA0
03 75 00 FE 7E 83 12 74 00 FE 7E 83 00 C3 E9 03 -- 03FEB0
FF EA 76 FF 00 AB E9 03 74 00 EF 7E 80 00 B4 E9 -- 03FEC0
ED 99 9A FF 1E 86 DD 9B DE 76 FF FA 76 FF EC 76 -- 03FED0
46 86 8D 16 50 92 46 8D 16 50 8E 46 8D 16 00 5C -- 03FEE0
8D 16 50 FF 4E 86 8D 16 50 FF 4A 86 8D 16 50 FF -- 03FEF0
50 FF 42 86 8D 16 50 FF 3E 86 8D 16 50 FF 52 86 -- 03FF00
FC 46 89 34 C4 83 00 2C D9 73 9A 50 0A 46 8D 16 -- 03FF10
0C 74 00 FE 7E 83 02 85 E9 FC 46 8B 53 74 C0 0B -- 03FF20
FF EA 76 FF 3B 75 00 EF 7E 80 41 74 00 FE 7E 83 -- 03FF30
FF 52 86 8D 16 50 FF 4E 86 8D 16 FA 76 FF EC 76 -- 03FF40
46 8D 16 50 FF 5A 86 8D 16 50 FF 56 86 8D 16 50 -- 03FF50
74 C0 0B FC 46 89 1A C4 83 00 2C D7 95 9A 50 0A -- 03FF60
16 FD 03 02 E7 C1 F2 7E 8B 02 38 E9 FC 46 8B 06 -- 03FF70
02 E7 C1 F2 7E 8B B6 5D D9 9B FF 52 86 D9 9B 1F -- 03FF80
F2 7E 8B 96 5D D9 9B FF 4E 86 D9 9B 1F 16 FD 03 -- 03FF90
5D D9 9B FF 5A 86 D9 9B 1F 16 FD 03 02 E7 C1 47 -- 03FFA0
56 86 D9 9B 1F 16 FD 03 02 E7 C1 47 F2 7E 8B B6 -- 03FFB0
8B 08 EB 00 00 F6 46 C7 F8 37 E9 96 5D D9 9B FF -- 03FFC0
00 86 E9 03 7C 08 F6 7E 83 F6 46 89 40 40 F6 46 -- 03FFD0
F4 46 C7 05 75 FF F4 7E 83 F4 46 89 48 F6 46 8B -- 03FFE0
7E 80 D1 74 00 FE 7E 83 0C 74 00 FE 7E 83 00 07 -- 03FFF0
8B FA 76 FF EC 76 FF EA 76 FF CB 75 00 EF 01 FE -- 040000
46 8B 50 52 00 6A 2D D2 8C C5 03 02 E0 C1 F4 46 -- 040010
F6 46 8B 50 52 00 4A 2D D2 8C C5 03 02 E0 C1 F4 -- 040020
C1 F6 46 8B 50 52 00 6A 2D D2 8C C5 03 02 E0 C1 -- 040030
50 0A 46 8D 16 50 52 00 4A 2D D2 8C C5 03 02 E0 -- 040040
E9 03 75 C0 0B FC 46 89 1A C4 83 00 2C D7 95 9A -- 040050
46 8B 06 75 00 EF 7E 80 01 49 E9 FC 46 8B FF 6F -- 040060
E4 2A EE 46 8A F0 8B E4 2A EF 46 8A 01 3D E9 FC -- 040070
9B 16 5E 8E 14 7E 03 F8 8B 2E C7 6B FE 2B F8 8B -- 040080
8A F0 8B E4 2A EF 46 8A FF 3A 9E D9 9B 26 45 D9 -- 040090
14 7E 03 F8 8B 2E C7 6B FE 2B F8 8B E4 2A EE 46 -- 0400A0
E4 46 D9 9B FF 36 9E D9 9B 2A 45 D9 9B 16 5E 8E -- 0400B0
D8 9B E0 46 D9 9B FF 7A 9E D9 9B FF 3A 86 D8 9B -- 0400C0
72 9E D9 9B E4 46 D9 9B FF 76 9E D9 9B FF 36 86 -- 0400D0
```

288

```
16 50 E0 46 8D 16 FF 6E 9E D9 9B E0 46 D9 9B FF -- 0400E0
8D 16 00 5C ED 99 9A FF 1E 86 DD 9B 50 E4 46 8D -- 0400F0
50 FF 76 86 8D 16 50 FF 72 86 8D 16 50 FF 6E 86 -- 040100
D9 9B 20 C4 83 00 2C D3 E9 9A 50 FF 7A 86 8D 16 -- 040110
86 D9 9B FF 16 9E D9 9B FF 3A A6 D8 9B FF 6A 86 -- 040120
66 86 D9 9B FF 6A 9E D9 9B FF 3A A6 D8 9B FF 16 -- 040130
FF 16 86 D9 9B FF 16 9E D9 9B FF 36 A6 D8 9B FF -- 040140
D8 9B 82 46 D9 9B FF 66 9E D9 9B FF 36 A6 D8 9B -- 040150
36 86 D8 9B FF 7E 86 D9 9B 82 5E D9 9B FF 3A 86 -- 040160
46 88 FF FF 05 E4 2A EF 46 8A FF 7E 9E D9 9B FF -- 040170
1E DC 2E 9B FF 6A 86 D9 9B EA 46 89 EC 46 8B EF -- 040180
2E 9B FF 66 86 D9 9B 15 76 00 5C ED 94 9A FF 24 -- 040190
46 8B F5 8E E9 03 76 00 5C ED 94 9A FF 24 1E DC -- 0401A0
00 F4 46 C7 00 00 6C C8 57 56 CB 5E 5F C9 9B FC -- 0401B0
55 89 05 89 FF 38 3E C5 2E 0C 56 8B 0A 46 8B 00 -- 0401C0
76 FF 57 56 05 89 FF 3C 3E C5 2E 48 0E 46 8B 02 -- 0401D0

5E 5F 00 8C 00 02 9A 0E 76 FF 00 6A 0A 76 FF 0C -- 0401E0
89 46 45 8B 10 7E C5 F6 46 89 0A 45 8B 10 7E C5 -- 0401F0
7E C5 A4 5E DD 9B FF 64 06 DF 2E 9B F8 46 01 FE -- 040200
FE 46 C7 BC 5E D9 9B A4 76 DC 9B 4A 45 D9 9B 10 -- 040210
E9 03 7C F8 46 3B FE 46 8B FE 46 FF 03 EB 00 00 -- 040220
03 7F FE 46 3B 48 F8 46 8B FF FF FA 46 C7 04 8D -- 040230
02 E6 C1 FE 76 8B FC 46 89 40 FE 46 8B 03 54 E9 -- 040240
8E 18 7E 03 02 E7 C1 FC 7E 8B 1A 46 8E 18 76 03 -- 040250
FE 76 8B C4 5E D9 9B 24 D8 26 9B 05 D9 9B 1A 5E -- 040260
03 02 E7 C1 FC 7E 8B 16 46 8E 14 76 03 02 E6 C1 -- 040270
C8 5E D9 9B 24 D8 26 9B 05 D9 9B 16 5E 8E 14 7E -- 040280
75 00 5C ED 94 9A FF 24 1E DC 2E 9B C8 46 D9 9B -- 040290
9A C8 76 D8 9B E0 D9 9B C4 46 D9 9B 01 1C E9 03 -- 0402A0
C0 5E D9 9B 08 C4 83 00 64 3E 62 9A 00 5C ED 99 -- 0402B0
9A A4 5E DC 9B C0 46 D9 9B A4 5E DD 9B EE D9 9B -- 0402C0
8E 18 76 03 02 E6 C1 FC 76 8B 26 77 00 5C ED 94 -- 0402D0
D9 9B 1A 5E 8E 18 7E 03 02 E7 C1 FE 7E 8B 1A 46 -- 0402E0
9B EE D9 9B 78 72 00 5C ED 94 9A 1C D8 26 9B 05 -- 0402F0
00 5C ED 94 9A 9C 5E DC 9B C0 46 D9 9B 9C 5E DD -- 040300
7E 8B 16 46 8E 14 76 03 02 E6 C1 FC 76 8B 26 75 -- 040310
D8 26 9B 05 D9 9B 16 5E 8E 14 7E 03 02 E7 C1 FE -- 040320
9B 94 5E DD 9B EE D9 9B 3C 72 00 5C ED 94 9A 1C -- 040330
76 8B 2E 76 00 5C ED 94 9A 94 5E DC 9B C0 46 D9 -- 040340
02 E7 C1 FE 7E 8B 1A 46 8E 18 76 03 02 E6 C1 FC -- 040350
ED 94 9A 1C D8 26 9B 05 D9 9B 1A 5E 8E 18 7E 03 -- 040360
C0 46 D9 9B FA 46 89 D8 F7 FA 46 8B 08 76 00 5C -- 040370
5E DD 9B 08 C4 83 00 64 5A DC 9A 00 5C ED 99 9A -- 040380
46 D9 9B D0 5E D9 9B A4 4E DC 9B BC 46 D9 9B A4 -- 040390
DD 9B 08 C4 83 00 64 2E 6A 9A 00 5C ED 99 9A C0 -- 0403A0
3D EB CC 5E D9 9B A4 4E DC 9B BC 46 D9 9B A4 5E -- 0403B0
8B CC 5E D9 9B EE D9 9B D0 5E D9 9B BC 46 D9 9B -- 0403C0
E7 C1 FE 7E 8B 1A 46 8E 18 76 03 02 E6 C1 FC 76 -- 0403D0
94 9A 1C D8 26 9B 05 D9 9B 1A 5E 8E 18 7E 03 02 -- 0403E0
FE 7E 8B FA 46 89 D8 F7 FA 46 8B 08 76 00 5C ED -- 0403F0
D8 9B 05 D9 9B 16 5E 8E 14 7E 03 02 E7 C1 01 FE -- 040400
8E 18 7E 03 02 E7 C1 FE 7E 8B EC 5E D9 9B D0 66 -- 040410
FE 7E 8B F0 5E D9 9B CC 66 D8 9B 05 D9 9B 1A 5E -- 040420
D0 46 D8 9B 05 D9 9B 16 5E 8E 14 7E 03 02 E7 C1 -- 040430
1A 5E 8E 18 7E 03 02 E7 C1 FE 7E 8B DC 5E D9 9B -- 040440
E7 C1 FC 7E 8B E0 5E D9 9B CC 46 D8 9B 05 D9 9B -- 040450
D9 9B D0 66 D8 9B 05 D9 9B 16 5E 8E 14 7E 03 02 -- 040460
D9 9B 1A 5E 8E 18 7E 03 02 E7 C1 FC 7E 8B E4 5E -- 040470
03 02 E7 C1 FC 7E 8B E8 5E D9 9B CC 66 D8 9B 05 -- 040480
```

```
D4 5E D9 9B D0 46 D8 9B 05 D9 9B 16 5E 8E 14 7E -- 040490
9B 05 D9 9B 1A 5E 8E 18 7E 03 02 E7 C1 FC 7E 8B -- 0404A0
FA 76 FF F6 76 FF 1C 76 FF D8 5E D9 9B CC 46 D8 -- 0404B0
16 50 EC 46 8D 16 50 E8 46 8D 16 50 E4 46 8D 16 -- 0404C0
C4 83 00 2C D7 95 9A 50 0A 46 8D 16 50 F0 46 8D -- 0404D0
76 FF 01 D6 E9 F4 46 8B 06 74 C0 0B F4 46 89 1A -- 0404E0
16 50 DC 46 8D 16 50 D8 F7 FA 46 8B F6 76 FF 1C -- 0404F0
8D 16 50 F0 46 8D 16 50 EC 46 8D 16 50 E0 46 8D -- 040500
C0 0B F4 46 89 1A C4 83 00 2C D7 95 9A 50 0A 46 -- 040510
46 8B F6 76 FF 1C 76 FF 01 9C E9 F4 46 8B 06 74 -- 040520
8D 16 50 D8 46 8D 16 50 D4 46 8D 16 50 D8 F7 FA -- 040530
D7 95 9A 50 0A 46 8D 16 50 E0 46 8D 16 50 DC 46 -- 040540
E9 F4 46 8B 06 74 C0 0B F4 46 89 1A C4 83 00 2C -- 040550
50 D4 46 8D 16 FA 76 FF F6 76 FF 1C 76 FF 01 62 -- 040560
16 50 E8 46 8D 16 50 E4 46 8D 16 50 D8 46 8D 16 -- 040570

0B F4 46 89 1A C4 83 00 2C D7 95 9A 50 0A 46 8D -- 040580
03 02 E7 C1 FE 7E 8B 01 2B E9 F4 46 8B 06 74 C0 -- 040590
B8 5E D9 9B BC 66 D8 9B 05 D9 9B 1A 5E 8E 18 7E -- 0405A0
9B 05 D9 9B 1A 5E 8E 18 7E 03 02 E7 C1 FE 7E 8B -- 0405B0
76 FF AC 5E DD 9B EE D9 9B B4 5E D9 9B BC 46 D8 -- 0405C0
5C ED 99 9A AC 46 DD 9B FF 6A FF 6A F6 76 FF 1C -- 0405D0
E0 C1 FE 46 8B 50 BC 46 8D 16 50 BC 46 8D 16 00 -- 0405E0
03 02 E0 C1 FE 46 8B 50 52 16 56 8B 14 46 03 02 -- 0405F0
03 02 E0 C1 FE 46 8B 50 52 1A 56 8B 18 46 01 FE -- 040600
C1 FE 46 8B 50 B4 46 8D 16 50 52 16 56 8B 14 46 -- 040610
16 50 B8 46 8D 16 50 52 16 56 8B 14 46 03 02 E0 -- 040620
0B F4 46 89 34 C4 83 00 2C D9 73 9A 50 0A 46 8D -- 040630
01 6A F6 76 FF 1C 76 FF 7E EB F4 46 8B 05 74 C0 -- 040640
50 BC 46 8D 16 00 5C ED 99 9A AC 46 DD 9B 01 6A -- 040650
56 8B 14 46 03 02 E0 C1 FE 46 8B 50 BC 46 8D 16 -- 040660
52 1A 56 8B 18 46 03 02 E0 C1 FE 46 8B 50 52 16 -- 040670
16 50 52 16 56 8B 14 46 03 02 E0 C1 FE 46 8B 50 -- 040680
16 56 8B 14 46 03 02 E0 C1 FE 46 8B 50 B4 46 8D -- 040690
2C D9 73 9A 50 0A 46 8D 16 50 B8 46 8D 16 50 52 -- 0406A0
46 8B FB 6A E9 03 75 C0 0B F4 46 89 34 C4 83 00 -- 0406B0
00 84 C8 57 56 CB 5E 5F C9 9B F4 46 8B 03 EB F4 -- 0406C0
38 3E C5 2E 0C 56 8B 0A 46 8B 00 00 F4 46 C7 00 -- 0406D0
89 FF 3C 3E C5 2E 48 0E 46 8B 02 55 89 05 89 FF -- 0406E0
02 9A 0E 76 FF 00 6A 0A 76 FF 0C 76 FF 57 56 05 -- 0406F0
7E C5 F6 46 89 0A 45 8B 10 7E C5 5E 5F 00 8C 00 -- 040700
5E DD 9B FF 64 06 DF 2E 9B F8 46 89 46 45 8B 10 -- 040710
AC 5E D9 9B 8C 76 DC 9B 4A 45 D9 9B 10 7E C5 8C -- 040720
F8 46 3B FE 46 8B FE 46 FF 03 EB 00 00 FE 46 C7 -- 040730
46 8B FA 46 89 D8 F7 40 FE 46 8B 05 72 E9 03 7C -- 040740
46 89 40 FE 46 8B 03 1C E9 03 7F FE 46 3B 48 F8 -- 040750
FC 7E 8B 1A 46 8E 18 76 03 02 E6 C1 FE 76 8B FC -- 040760
24 D8 26 9B 05 D9 9B 1A 5E 8E 18 7E 03 02 E7 C1 -- 040770
16 46 8E 14 76 03 02 E6 C1 FE 76 8B C4 5E D9 9B -- 040780
9B 05 D9 9B 16 5E 8E 14 7E 03 02 E7 C1 FC 7E 8B -- 040790
24 1E DC 2E 9B C8 46 D9 9B C8 5E D9 9B 24 D8 26 -- 0407A0
9B C4 46 D9 9B 01 1E E9 03 75 00 5C ED 94 9A FF -- 0407B0
00 64 3E 62 9A 00 5C ED 99 9A C8 76 D8 9B E0 D9 -- 0407C0
D9 9B 8C 5E DD 9B EE D9 9B B0 5E D9 9B 08 C4 83 -- 0407D0
FC 76 8B 26 77 00 5C ED 94 9A 8C 5E DC 9B B0 46 -- 0407E0
03 02 E7 C1 FE 7E 8B 1A 46 8E 18 76 03 02 E6 C1 -- 0407F0
94 9A 1C D8 26 9B 05 D9 9B 1A 5E 8E 18 7E 01 FE -- 040800
B0 46 D9 9B 84 5E DD 9B EE D9 9B 7A 72 00 5C ED -- 040810
E6 C1 FC 76 8B 26 75 00 5C ED 94 9A 84 5E DC 9B -- 040820
14 7E 03 02 E7 C1 FE 7E 8B 16 46 8E 14 76 03 02 -- 040830
```

```
72 00 5C ED 94 9A 1C D8 26 9B 05 D9 9B 16 5E 8E  --  040840
9E DC 9B B0 46 D9 9B FF 7C 9E DD 9B EE D9 9B 3E  --  040850
03 02 E6 C1 FC 76 8B 2E 76 00 5C ED 94 9A FF 7C  --  040860
5E 8E 18 7E 03 02 E7 C1 FE 7E 8B 1A 46 8E 18 76  --  040870
8B 08 76 00 5C ED 94 9A 1C D8 26 9B 05 D9 9B 1A  --  040880
00 5C ED 99 9A B0 46 D9 9B FA 46 89 D8 F7 FA 46  --  040890
AC 46 D9 9B 8C 5E DD 9B 08 C4 83 00 64 5A DC 9A  --  0408A0
5C ED 99 9A B0 46 D9 9B D0 5E D9 9B 8C 4E DC 9B  --  0408B0
46 D9 9B 8C 5E DD 9B 08 C4 83 00 64 2E 6A 9A 00  --  0408C0
9B AC 46 D9 9B 3D EB CC 5E D9 9B 8C 4E DC 9B AC  --  0408D0
02 E6 C1 FC 76 8B CC 5E D9 9B EE D9 9B D0 5E D9  --  0408E0
8E 18 7E 03 02 E7 C1 FE 7E 8B 1A 46 8E 18 76 03  --  0408F0
08 76 00 5C ED 94 9A 1C D8 26 9B 05 D9 9B 1A 5E  --  040900
7E 03 02 E7 C1 FE 7E 8B FA 46 89 D8 F7 FA 46 8B  --  040910

8B EC 5E D9 9B D0 66 D8 9B 05 D9 9B 16 5E 8E 14  --  040920
D8 9B 05 D9 9B 1A 5E 8E 18 7E 03 02 E7 C1 FE 7E  --  040930
8E 14 7E 03 02 E7 C1 FE 7E 8B F0 5E D9 9B CC 66  --  040940
FE 7E 8B DC 5E D9 9B D0 46 D8 9B 05 D9 9B 16 5E  --  040950
CC 46 D8 9B 05 D9 9B 1A 5E 8E 18 7E 03 02 E7 C1  --  040960
16 5E 8E 14 7E 03 02 E7 C1 FC 7E 8B E0 5E D9 9B  --  040970
E7 C1 FC 7E 8B E4 5E D9 9B D0 66 D8 9B 05 D9 9B  --  040980
D9 9B CC 66 D8 9B 05 D9 9B 1A 5E 8E 18 7E 03 02  --  040990
D9 9B 16 5E 8E 14 7E 03 02 E7 C1 FC 7E 8B E8 5E  --  0409A0
03 02 E7 C1 FC 7E 8B D4 5E D9 9B D0 46 D8 9B 05  --  0409B0
D8 5E D9 9B CC 46 D8 9B 05 D9 9B 1A 5E 8E 18 7E  --  0409C0
8D 16 50 E4 46 8D 16 FA 76 FF F6 76 FF 1C 76 FF  --  0409D0
46 8D 16 50 F0 46 8D 16 50 EC 46 8D 16 50 E8 46  --  0409E0
74 C0 0B F4 46 89 1A C4 83 00 2C D7 95 9A 50 0A  --  0409F0
8B F6 76 FF 1C 76 FF 02 B5 E9 F4 46 8B 06 01 FE  --  040A00
16 50 D8 46 8D 16 50 D4 46 8D 16 50 D8 F7 FA 46  --  040A10
95 9A 50 0A 46 8D 16 50 E0 46 8D 16 50 DC 46 8D  --  040A20
F4 46 8B 06 74 C0 0B F4 46 89 1A C4 83 00 2C D7  --  040A30
D4 46 8D 16 FA 76 FF F6 76 FF 1C 76 FF 02 7B E9  --  040A40
50 E8 46 8D 16 50 E4 46 8D 16 50 D8 46 8D 16 50  --  040A50
F4 46 89 1A C4 83 00 2C D7 95 9A 50 0A 46 8D 16  --  040A60
02 E7 C1 FE 7E 8B 02 44 E9 F4 46 8B 06 74 C0 0B  --  040A70
56 D9 9B AC 66 D8 9B 05 D9 9B 1A 5E 8E 18 7E 03  --  040A80
5E 8E 18 7E 03 02 E7 C1 FE 7E 8B A8 5E D9 9B A4  --  040A90
A0 5E D9 9B 9C 56 D9 9B AC 46 D8 9B 05 D9 9B 1A  --  040AA0
9B 05 D9 9B 16 5E 8E 14 7E 03 02 E7 C1 FE 7E 8B  --  040AB0
9B C0 5E D9 9B BC 56 D9 9B B8 56 D9 9B B4 56 D9  --  040AC0
E9 03 7F FE 46 3B 48 F8 46 8B 94 5E DD 9B EE D9  --  040AD0
5C ED 94 9A FF 24 1E DC 2E 9B C4 46 D9 9B 00 E0  --  040AE0
ED 94 9A FF 24 1E DC 2E 9B D0 46 D9 9B 7C 77 00  --  040AF0
9B C4 46 D9 9B 8C 5E DD 9B EE D9 9B 27 77 00 5C  --  040B00
2E 9B C8 46 D9 9B 33 75 00 5C ED 94 9A 8C 5E DC  --  040B10
9B F0 46 D9 9B 22 76 00 5C ED 94 9A FF 24 1E DC  --  040B20
9B EC 46 D9 9B A4 5E D9 9B E0 46 D9 9B A8 5E D9  --  040B30
46 D9 9B 75 EB BC 5E D9 9B DC 46 D9 9B C0 5E D9  --  040B40
46 D9 9B A4 5E D9 9B F0 46 D9 9B A8 5E D9 9B E0  --  040B50
9B 53 EB BC 5E D9 9B EC 46 D9 9B C0 5E D9 9B DC  --  040B60
22 76 00 5C ED 94 9A FF 24 1E DC 2E 9B D0 46 D9  --  040B70
9C 5E D9 9B E0 46 D9 9B A0 5E D9 9B F0 46 D9 9B  --  040B80
B4 5E D9 9B DC 46 D9 9B B8 5E D9 9B EC 46 D9 9B  --  040B90
D9 9B F0 46 D9 9B A0 5E D9 9B E0 46 D9 9B 20 EB  --  040BA0
D9 9B EC 46 D9 9B B8 5E D9 9B DC 46 D9 9B 9C 5E  --  040BB0
73 00 5C ED 94 9A A0 5E D8 9B A8 46 D9 9B B4 5E  --  040BC0
FF 6A 50 D8 F7 40 FE 46 8B F6 76 FF 1C 76 FF 6C  --  040BD0
8D 16 50 AC 46 8D 16 00 5C ED 99 9A 94 46 DD 9B  --  040BE0
```

291

EP 0 533 348 A2

```
52 16 56 8B 14 46 03 02 E0 C1 FE 46 8B 50 AC 46 -- 040BF0
52 1A 56 8B 18 46 03 02 E0 C1 FE 46 8B 50 01 FE -- 040C00
50 C0 46 8D 16 50 A0 46 8D 16 50 B8 46 8D 16 50 -- 040C10
83 00 2C D9 73 9A 50 0A 46 8D 16 50 A8 46 8D 16 -- 040C20
9B 00 81 E9 F4 46 8B 06 74 C0 0B F4 46 89 34 C4 -- 040C30
EC E9 03 72 00 5C ED 94 9A 9C 5E D8 9B A4 46 D9 -- 040C40
DD 9B 01 6A 50 40 FE 46 8B F6 76 FF 1C 76 FF FA -- 040C50
AC 46 8D 16 50 AC 46 8D 16 00 5C ED 99 9A 94 46 -- 040C60
8B 50 52 16 56 8B 14 46 03 02 E0 C1 FE 46 8B 50 -- 040C70
46 8D 16 50 52 1A 56 8B 18 46 03 02 E0 C1 FE 46 -- 040C80
A4 46 8D 16 50 BC 46 8D 16 50 9C 46 8D 16 50 B4 -- 040C90
46 89 34 C4 83 00 2C D9 73 9A 50 0A 46 8D 16 50 -- 040CA0
F4 46 8B 03 EB F4 46 8B FA 85 E9 03 75 C0 0B F4 -- 040CB0

0C 56 8B 0A 46 8B EC 8B 55 57 56 CB 5E 5F C9 9B -- 040CC0
FF FF 05 0E 46 8B 02 55 89 05 89 FF 38 3E C5 2E -- 040CD0
6A 0A 76 FF 0C 76 FF 57 56 05 89 FF 3C 3E C5 2E -- 040CE0
C9 5E 5F 00 8C 00 02 9A 35 FF FF 3C 3E C5 2E 00 -- 040CF0
C5 2E FF 3C 36 C4 2E 00 00 36 C8 57 56 CB 5E 5F -- 040D00
FF 40 36 C4 2E 1C 03 26 02 4D 8B 1D 8B FF 38 3E -- 040D10
B8 06 76 C3 3B 04 03 26 02 55 8B 05 8B 0A 7E C5 -- 040D20
DD 9B EE D9 9B EA 46 89 36 46 8B 01 11 E9 10 90 -- 040D30
9B 24 D8 26 9B 05 D9 9B 0E 7E C5 16 76 C4 CA 5E -- 040D40
05 D9 9B 12 7E C5 30 73 00 5C ED 94 9A CA 5E DC -- 040D50
7E C5 DA 5E D9 9B 05 D9 9B 0E 7E C5 E2 5E D9 9B -- 040D60
D9 9B 05 D9 9B 16 7E C5 E6 5E D9 9B 05 D9 9B 1A -- 040D70
05 D9 9B 1A 7E C5 30 EB D8 46 89 38 46 8B DE 5E -- 040D80
7E C5 DA 5E D9 9B 05 D9 9B 16 7E C5 E2 5E D9 9B -- 040D90
D9 9B 05 D9 9B 0E 7E C5 E6 5E D9 9B 05 D9 9B 12 -- 040DA0
2E 9B 2E 46 DD 9B D8 46 89 D8 F7 38 46 8B DE 5E -- 040DB0
03 EB 00 05 B8 05 74 00 5C ED 94 9A FF 24 1E DC -- 040DC0
89 3A 46 8B 0E 7D 00 D8 7E 83 D2 46 88 00 04 B8 -- 040DD0
D4 46 89 3A 46 8B 0C EB D4 46 89 3C 46 8B D6 46 -- 040DE0
EC 5E D9 9B 05 D9 9B 22 7E C5 D6 46 89 3C 46 8B -- 040DF0
9B 2A 7E C5 F0 5E D9 9B 05 D9 9B 1E 7E C5 01 FE -- 040E00
F8 5E D9 9B 05 D9 9B 26 7E C5 F4 5E D9 9B 05 D9 -- 040E10
02 75 FF 0A 7E C5 57 56 FC 5E D9 9B 2E 46 DD 9B -- 040E20
5E 5F 00 5C FE EC 9A 2E 6A 50 D2 46 8D 16 35 FF -- 040E30
C8 57 56 CB 5E 5F C9 9B C0 2B 2E 05 83 0A 7E C5 -- 040E40
05 8A 3D C5 0A 7E C5 01 05 C6 0E 7E C5 00 00 04 -- 040E50
3F EB E4 2A 05 8A 12 7E C5 05 88 12 7E C5 E4 2A -- 040E60
54 8B 26 04 03 26 05 8B FF 34 3E C5 2E 0A 76 C4 -- 040E70
C5 2E 0A 76 C4 3D EB 02 55 89 05 89 0A 7E C5 02 -- 040E80
89 0A 7E C5 02 54 8B 26 04 03 26 05 8B FF 40 3E -- 040E90
48 00 81 E9 91 05 C6 0E 7E C5 22 EB 02 55 89 05 -- 040EA0
FE 60 FE AE A7 FF 2E D8 8B E0 D1 F1 77 00 04 3D -- 040EB0
2A 05 8A 3D C5 0A 7E C5 FE 7B FE 7B FE 60 FE 60 -- 040EC0
7E C5 08 77 05 3D 80 12 7E C5 05 88 12 7E C5 E4 -- 040ED0
C6 12 7E C5 00 05 C6 0E 7E C5 0E 73 01 3D 80 12 -- 040EE0
40 3E C5 2E 0C 76 03 3D 80 12 7E C5 3C EB 00 05 -- 040EF0
89 05 8B FF 34 3E C5 2E 0A EB FE 46 89 05 8B FF -- 040F00
8A 02 5C 8E 26 3C 03 26 FE 7E 8B 0A 76 C4 FE 46 -- 040F10
00 05 C6 0E 7E C5 06 75 C0 0A FD 46 88 E4 2A 05 -- 040F20
00 00 00 00 00 00 00 00 00 00 00 00 CB 5E 5F C9 -- 040F30
00 6C 33 D0 00 6C 33 CC 00 6C 33 C8 3F F0 00 00 -- 040F40
54 44 2D 18 40 66 80 00 00 00 00 00 6C 33 CA -- 040F50
00 00 00 00 3F E0 00 00 00 00 00 40 09 21 FB -- 040F60
46 89 C0 2B 00 00 10 C8 57 56 00 02 40 00 00 00 -- 040F70
2E FF F4 36 FF 2E F8 46 89 FA 46 89 FC 46 89 FE -- 040F80
C5 2E 06 C4 83 00 64 24 00 9A 02 6A FF F2 36 FF -- 040F90
```

292

```
89 00 01 B8 03 EB C0 2B 04 75 4D 3D 80 FF F2 3E -- 040FA0
FF F2 76 FF 50 F6 46 8D 16 50 F4 46 8D 16 F6 46 -- 040FB0
C5 2E 10 C4 83 00 64 3D BA 9A 14 6A 04 6A F0 76 -- 040FC0
89 00 01 B8 03 EB C0 2B 04 75 50 3D 80 FF F6 3E -- 040FD0
FF F2 76 FF 50 F6 46 8D 16 50 F4 46 8D 16 F6 46 -- 040FE0
5F C9 10 C4 83 00 64 3D BA 9A 12 6A 04 6A F0 76 -- 040FF0
00 00 00 00 00 6C 33 BF 00 6C 33 BE CB 5E 01 FE -- 041000
E6 E9 03 74 00 0A 7E 83 00 00 02 C8 57 56 00 00 -- 041010
2D 60 06 8B 2E 05 89 2D 58 3E C5 2E 10 46 8B 02 -- 041020
2E 02 55 89 05 89 2D 5C 3E C5 2E 2D 62 16 8B 2E -- 041030
05 89 2D 64 3E C5 2E 2D 6A 16 8B 2E 2D 68 06 8B -- 041040
3E C5 2E 2D 72 16 8B 2E 2D 70 06 8B 2E 02 55 89 -- 041050

7A 16 8B 2E 2D 78 06 8B 2E 02 55 89 05 89 2D 6C -- 041060
2D 80 06 8B 2E 02 55 89 05 89 2D 74 3E C5 2E 2D -- 041070
2E 02 55 89 05 89 2D 7C 3E C5 2E 2D 82 16 8B 2E -- 041080
05 89 2D 84 3E C5 2E 2D 8A 16 8B 2E 2D 88 06 8B -- 041090
3E C5 2E 2D 92 16 8B 2E 2D 90 06 8B 2E 02 55 89 -- 0410A0
9A 16 8B 2E 2D 98 06 8B 2E 02 55 89 05 89 2D 8C -- 0410B0
A0 06 DD 2E 9B 02 55 89 05 89 2D 94 3E C5 2E 2D -- 0410C0
2E 2D AC 06 DD 2E 9B 1D D9 9B 2D 9C 3E C5 2E 2D -- 0410D0
3E C5 2E 2D B8 06 DD 2E 9B 1D D9 9B 2D A8 3E C5 -- 0410E0
D8 26 9B EE D9 9B 2D C4 36 C4 2E 1D D9 9B 2D B4 -- 0410F0
04 5D D9 9B EE D9 9B 1D D9 9B 2D C0 3E C5 2E 24 -- 041100
5D D9 9B 2D B8 06 DD 2E 9B 08 5D D9 9B EE D9 9B -- 041110
2D C4 3E C5 2E 10 5D D9 9B 2D C8 06 DD 2E 9B 0C -- 041120
D9 9B 2D C0 3E C5 2E 2D C8 06 DC 2E 9B 05 D9 9B -- 041130
06 DD 2E 9B 18 5D D9 9B 2D AC 06 DD 2E 9B 14 5D -- 041140
20 5D D9 9B 2D D0 06 DD 2E 9B 1C 5D D9 9B 2D C8 -- 041150
2D E0 06 DD 2E 9B 24 5D D9 9B 2D D8 06 DD 2E 9B -- 041160
2E 9B 2C 5D D9 9B 2D E8 06 DD 2E 9B 28 5D D9 9B -- 041170
D9 9B 2D F8 06 DD 2E 9B 30 5D D9 9B 2D F0 06 DD -- 041180
EE D9 9B 38 5D D9 9B 24 D8 26 9B EE D9 9B 34 5D -- 041190
C5 2E 40 5D D9 9B 2D C8 06 DD 2E 9B 3C 5D D9 9B -- 0411A0
C0 3E C5 2E 2D C8 06 DC 2E 9B 05 D9 9B 2D C4 3E -- 0411B0
1D D9 9B 2E 00 3E C5 2E EE D9 9B 44 5D D9 9B 2D -- 0411C0
D8 26 9B EE D9 9B 04 5D D9 9B 2D B8 06 DD 2E 9B -- 0411D0
06 DD 2E 9B 0C 5D D9 9B EE D9 9B 08 5D D9 9B 24 -- 0411E0
14 5D D9 9B 2D C8 06 DD 2E 9B 10 5D D9 9B 2D AC -- 0411F0
C4 3E C5 2E 18 5D D9 9B 2D C8 06 DD 2E 9B 01 FE -- 041200
9B 2E 00 3E C5 2E 2D C8 06 DC 2E 9B 05 D9 9B 2D -- 041210
DD 2E 9B 20 5D D9 9B 2D B8 06 DD 2E 9B 1C 5D D9 -- 041220
2E 9B 28 5D D9 9B EE D9 9B 24 5D D9 9B 2D AC 06 -- 041230
D9 9B 2D A0 06 DD 2E 9B 2C 5D D9 9B 2D A0 06 DD -- 041240
9B EE D9 9B 34 5D D9 9B 2D C8 06 DD 2E 9B 30 5D -- 041250
2E 9B 3C 5D D9 9B EE D9 9B 38 5D D9 9B 24 D8 26 -- 041260
05 D9 9B 2D C4 3E C5 2E 40 5D D9 9B 2D C8 06 DD -- 041270
C7 44 5D D9 9B 2E 00 3E C5 2E 2D C8 06 DC 2E 9B -- 041280
0C 76 FF 0E 76 FF 61 7D 04 FE 7E 83 00 00 FE 46 -- 041290
36 C4 2E 08 C4 83 00 34 1F 2F 9A 01 6A FE 76 FF -- 0412A0
9B 02 5C 8E 26 3C 03 26 02 E7 C1 FE 7E 8B 2D 94 -- 0412B0
1E 8E 2E 2E 04 3E 03 2E 02 E7 C1 FE 7E 8B 05 D9 -- 0412C0
2E 04 3E 03 2E 02 E7 C1 FE 7E 8B 1D D9 9B 2E 06 -- 0412D0
8E 2E 2E 08 3E 03 2E 02 E7 C1 FE 7E 8B 05 D9 9B -- 0412E0
2D 58 3E C5 2E 99 EB FE 46 FF 1D D9 9B 2E 0A 1E -- 0412F0
C7 23 75 FF 0A 7E 83 05 89 2E 0C 3E C5 2E 05 8B -- 041300
0C 76 FF 0E 76 FF 18 7D 04 FE 7E 83 00 00 FE 46 -- 041310
FE 46 FF 08 C4 83 00 34 1F 2F 9A 02 6A FE 76 FF -- 041320
C7 00 00 2C C8 57 56 CB 5E 5F C9 9B C0 2B E2 EB -- 041330
1A 76 FF 1C 76 FF 3E 7D 04 E2 7E 83 00 00 E2 46 -- 041340
```

```
E2 7E 8B 08 C4 83 00 34 1F 2F 9A 02 6A E2 76 FF -- 041350
05 D9 9B 2E 06 1E 8E 2E 2E 04 3E 03 2E 02 E7 C1 -- 041360
2E 0A 1E 8E 2E 2E 08 3E 03 2E 02 E7 C1 E2 7E 8B -- 041370
2E 9B 05 D9 9B 0E 7E C5 BC EB E2 46 FF 1D D9 9B -- 041380
C4 83 00 5C ED F9 9A 00 5C ED 99 9A 2D A0 06 DC -- 041390
2E 10 36 DC 2E 9B 05 D9 9B 0E 7E C5 DC 46 89 08 -- 0413A0
2E 10 36 DC 2E 9B 05 D9 9B 12 7E C5 F4 5E D9 9B -- 0413B0
E9 03 7C 09 E2 7E 83 00 00 E2 46 C7 F0 5E D9 9B -- 0413C0
34 1E 8D 9A 01 6A 50 F4 46 8D 16 E2 76 FF 01 18 -- 0413D0
02 6A 50 F0 46 8D 16 E2 76 FF F8 8B 08 C4 83 00 -- 0413E0
E9 03 7E 00 01 3D C7 03 08 C4 83 00 34 1E 8D 9A -- 0413F0

00 B0 E9 03 74 04 E2 7E 83 E2 46 FF 00 E8 01 FE -- 041400
8E 26 3C 03 26 02 E7 C1 0C 7E 8B 2D 74 36 C4 2E -- 041410
7E 8B 2D 84 36 C4 2E D4 5E D9 9B 05 D9 9B 02 5C -- 041420
D8 9B 05 D9 9B 02 5C 8E 26 3C 03 26 02 E7 C1 0C -- 041430
E7 C1 0C 7E 8B 2D 7C 36 C4 2E F8 5E D9 9B D4 66 -- 041440
2E D4 5E D9 9B 05 D9 9B 02 5C 8E 26 3C 03 26 02 -- 041450
5C 8E 26 3C 03 26 02 E7 C1 0C 7E 8B 2D 8C 36 C4 -- 041460
74 3E C5 2E FC 5E D9 9B D4 66 D8 9B 05 D9 9B 02 -- 041470
9B 0E 7E C5 02 45 8E 35 03 02 E6 C1 0C 76 8B 2D -- 041480
C5 2E F4 5E D9 9B F8 76 D8 9B 24 D8 26 9B 05 D9 -- 041490
7E C5 02 45 8E 35 03 02 E6 C1 0C 76 8B 2D 7C 3E -- 0414A0
F0 5E D9 9B FC 76 D8 9B 24 D8 26 9B 05 D9 9B 12 -- 0414B0
9B 05 D9 9B 0E 7E C5 FF 02 E9 03 74 07 E2 7E 83 -- 0414C0
9B 05 D9 9B 12 7E C5 F4 5E D9 9B 2E 10 36 DC 2E -- 0414D0
08 E2 7E 83 FE DF E9 F0 5E D9 9B 2E 10 36 DC 2E -- 0414E0
C5 2E E2 46 8B 00 07 05 C7 2E 18 3E C5 2E 09 7E -- 0414F0
9A 37 74 00 3D 83 2E 1C 3E C5 2E 05 89 2E 18 3E -- 041500
01 6A 00 6A 00 6A 00 6A 25 75 C0 0B 00 5C 69 2F -- 041510
2E 20 3E C5 2E 0A C4 83 00 64 28 52 9A 12 63 68 -- 041520
3E C5 2E 0A 73 E9 00 02 B8 06 74 00 01 3D 05 89 -- 041530
7D 04 E2 7E 83 00 00 E2 46 C7 00 00 05 C7 2E 1C -- 041540
34 1F 2F 9A 02 6A E2 76 FF 1A 76 FF 1C 76 FF 3E -- 041550
2E 2E 04 3E 03 2E 02 E7 C1 E2 7E 8B 08 C4 83 00 -- 041560
3E 03 2E 02 E7 C1 E2 7E 8B 05 D9 9B 2E 06 1E 8E -- 041570
2E BC EB E2 46 FF 1D D9 9B 2E 0A 1E 8E 2E 2E 08 -- 041580
00 00 E2 46 C7 59 75 00 07 3D 05 8B 2E 18 3E C5 -- 041590
03 2E E7 D1 E2 7E 8B 09 27 E9 03 7C 04 E2 7E 83 -- 0415A0
2E 30 74 0A 46 23 05 8B 2E 26 1E 8E 2E 2E 24 3E -- 0415B0
5C 8E 26 3C 03 26 02 E7 C1 E2 7E 8B 2D 74 36 C4 -- 0415C0
C1 E2 7E 8B 2D 7C 36 C4 2E 1D D9 9B EE D9 9B 02 -- 0415D0
FF 1D D9 9B EE D9 9B 02 5C 8E 26 3C 03 26 02 E7 -- 0415E0
5F 75 00 08 3D 05 8B 2E 18 3E C5 2E AC EB E2 46 -- 0415F0
08 C2 E9 03 7C 04 E2 7E 83 00 00 E2 46 C7 01 FE -- 041600
8B 2E 26 1E 8E 2E 2E 24 3E 03 2E E7 D1 E2 7E 8B -- 041610
E7 C1 E2 7E 8B 2D 84 36 C4 2E 36 74 0A 46 23 05 -- 041620
D9 9B 2E 10 06 DD 2E 9B 02 5C 8E 26 3C 03 26 02 -- 041630
26 3C 03 26 02 E7 C1 E2 7E 8B 2D 8C 36 C4 2E 1D -- 041640
EB E2 46 FF 1D D9 9B 2E 10 06 DD 2E 9B 02 5C 8E -- 041650
01 FF E9 03 74 00 04 3D 05 8B 2E 18 3E C5 2E A6 -- 041660
22 76 03 F7 03 E6 D1 DC 76 8B 09 E7 C1 0C 7E 8B -- 041670
76 D8 9B 24 DE 26 9B 05 D9 9B 12 7E C5 24 46 8E -- 041680
03 7C 04 E2 7E 83 00 00 E2 46 C7 EC 5E D9 9B FC -- 041690
1E 8E 2E 2E 24 3E 03 2E E7 D1 E2 7E 8B 08 2F E9 -- 0416A0
5C 36 C4 2E 01 AD E9 03 75 0A 46 23 05 8B 2E 26 -- 0416B0
D9 9B 02 5C 8E 26 3C 03 26 02 E7 C1 E2 7E 8B 2D -- 0416C0
DC 2E 9B E4 46 D9 9B E4 5E D9 9B EC 46 D8 9B 05 -- 0416D0
2D AC 06 DD 2E 9B 0A 76 00 5C ED 94 9A 2D AC 1E -- 0416E0
94 9A 2D B8 1E DC 2E 9B E4 46 D9 9B E4 5E D9 9B -- 0416F0
```

```
2E  E4  5E  D9  9B  2D  B8  06  DD  2E  9B  0A  73  00  5C  ED  --  041700
5C  8E  26  3C  03  26  02  E7  C1  E2  7E  8B  2D  5C  36  C4  --  041710
D9  9B  2D  AC  0E  DC  2E  9B  25  D8  9B  E4  46  D9  9B  02  --  041720
9B  E4  46  D9  9B  3C  03  26  02  E7  C1  E2  7E  8B  E8  5E  --  041730
3C  03  26  02  E7  C1  E2  7E  8B  2D  64  36  C4  2E  1D  D9  --  041740
C4  2E  1D  D9  9B  05  D8  9B  E8  46  D9  9B  02  5C  8E  26  --  041750
02  5C  8E  26  3C  03  26  02  E7  C1  E2  7E  8B  2D  6C  36  --  041760
8B  2D  64  36  C4  2E  1D  D9  9B  05  D8  9B  E8  46  D9  9B  --  041770
9B  05  D9  9B  02  5C  8E  26  3C  03  26  02  E7  C1  E2  7E  --  041780
64  36  C4  2E  1A  76  00  5C  ED  94  9A  2D  A0  1E  DC  2E  --  041790

2E  9B  02  5C  8E  26  3C  03  26  02  E7  C1  E2  7E  8B  2D  --  0417A0
E7  C1  E2  7E  8B  2D  64  36  C4  2E  37  EB  2D  A0  06  DD  --  0417B0
28  1E  DC  2E  9B  05  D9  9B  02  5C  8E  26  3C  03  26  02  --  0417C0
E2  7E  8B  2D  64  36  C4  2E  18  73  00  5C  ED  94  9A  2E  --  0417D0
1D  D9  9B  EE  D9  9B  02  5C  8E  26  3C  03  26  02  E7  C1  --  0417E0
8E  26  3C  03  26  02  E7  C1  E2  7E  8B  2D  6C  36  C4  2E  --  0417F0
ED  94  9A  2D  C8  1E  DC  2E  9B  05  D9  9B  02  5C  01  FE  --  041800
26  02  E7  C1  E2  7E  8B  2D  6C  36  C4  2E  1A  76  00  5C  --  041810
C4  2E  3A  EB  2D  C8  06  DD  2E  9B  02  5C  8E  26  3C  03  --  041820
02  5C  8E  26  3C  03  26  02  E7  C1  E2  7E  8B  2D  6C  36  --  041830
1B  73  00  5C  ED  94  9A  2D  A0  1E  DC  2E  9B  05  D9  9B  --  041840
8E  26  3C  03  26  02  E7  C1  E2  7E  8B  2D  6C  36  C4  2E  --  041850
2B  E9  E2  46  FF  1D  D9  9B  2D  A0  06  DD  2E  9B  02  5C  --  041860
00  DC  E9  03  74  00  05  3D  05  8B  2E  18  3E  C5  2E  FE  --  041870
22  76  03  F7  03  E6  D1  DC  76  8B  09  E7  C1  0C  7E  8B  --  041880
76  D8  9B  24  DE  26  9B  05  D9  9B  12  7E  C5  24  46  8E  --  041890
03  7C  04  E2  7E  83  00  00  E2  46  C7  EC  5E  D9  9B  FC  --  0418A0
1E  8E  2E  2E  24  3E  03  2E  E7  D1  E2  7E  8B  06  21  E9  --  0418B0
64  36  C4  2E  00  8A  E9  03  75  0A  46  23  05  8B  2E  26  --  0418C0
D9  9B  02  5C  8E  26  3C  03  26  02  E7  C1  E2  7E  8B  2D  --  0418D0
03  26  02  E7  C1  E2  7E  8B  1D  D9  9B  05  D8  9B  EC  46  --  0418E0
76  00  5C  ED  94  9A  2D  A0  1E  DC  2E  9B  05  D9  9B  3C  --  0418F0
26  3C  03  26  02  E7  C1  E2  7E  8B  2D  64  36  C4  2E  1B  --  041900
64  36  C4  2E  1D  D9  9B  2D  A0  06  DD  2E  9B  02  5C  8E  --  041910
D9  9B  02  5C  8E  26  3C  03  26  02  E7  C1  E2  7E  8B  2D  --  041920
C4  2E  18  73  00  5C  ED  94  9A  2E  28  1E  DC  2E  9B  05  --  041930
02  5C  8E  26  3C  03  26  02  E7  C1  E2  7E  8B  2D  64  36  --  041940
18  3E  C5  2E  FF  4E  E9  E2  46  FF  1D  D9  9B  EE  D9  9B  --  041950
E7  C1  0C  7E  8B  00  DF  E9  03  74  00  06  3D  05  8B  2E  --  041960
7E  C5  24  46  8E  22  76  03  F7  03  E6  D1  DC  76  8B  09  --  041970
EC  5E  D9  9B  FC  76  D8  9B  24  DE  26  9B  05  D9  9B  12  --  041980
7E  8B  05  36  E9  03  7C  04  E2  7E  83  00  00  E2  46  C7  --  041990
23  05  8B  2E  26  1E  8E  2E  2E  24  3E  03  2E  E7  D1  E2  --  0419A0
C1  E2  7E  8B  2D  6C  36  C4  2E  00  8D  E9  03  75  0A  46  --  0419B0
05  D8  9B  EC  46  D9  9B  02  5C  8E  26  3C  03  26  02  E7  --  0419C0
9B  05  D9  9B  3C  03  26  02  E7  C1  E2  7E  8B  1D  D9  9B  --  0419D0
6C  36  C4  2E  1B  76  00  5C  ED  94  9A  2D  C8  1E  DC  2E  --  0419E0
2E  9B  02  5C  8E  26  3C  03  26  02  E7  C1  E2  7E  8B  2D  --  0419F0
7E  8B  2D  6C  36  C4  2E  1D  D9  9B  2D  C8  06  DD  01  FE  --  041A00
2E  9B  05  D9  9B  02  5C  8E  26  3C  03  26  02  E7  C1  E2  --  041A10
2D  6C  36  C4  2E  1B  73  00  5C  ED  94  9A  2D  A0  1E  DC  --  041A20
DD  2E  9B  02  5C  8E  26  3C  03  26  02  E7  C1  E2  7E  8B  --  041A30
18  3E  C5  2E  FF  4B  E9  E2  46  FF  1D  D9  9B  2D  A0  06  --  041A40
76  8B  2D  7C  3E  C5  2E  01  0E  E9  03  74  00  3D  83  2E  --  041A50
9B  05  D9  9B  12  7E  C5  02  45  8E  35  03  02  E6  C1  0C  --  041A60
04  E2  7E  83  00  00  E2  46  C7  EC  5E  D9  9B  24  D8  26  --  041A70
2E  2E  24  3E  03  2E  E7  D1  E2  7E  8B  04  51  E9  03  7C  --  041A80
C4  2E  00  C3  E9  03  75  0A  46  23  05  8B  2E  26  1E  8E  --  041A90
02  5C  8E  26  3C  03  26  02  E7  C1  E2  7E  8B  2D  74  36  --  041AA0
```

```
03 74 00 5C ED 94 9A 2E 28 1E DC 2E 9B 05 D9 9B -- 041AB0
03 26 02 E7 C1 E2 7E 8B 2D 7C 36 C4 2E 00 9E E9 -- 041AC0
2E 1D D9 9B 05 D8 9B EC 46 D9 9B 02 5C 8E 26 3C -- 041AD0
E7 C1 E2 7E 8B D4 5E D9 9B 05 D9 9B 2E 30 3E C5 -- 041AE0
9B D4 66 D8 9B 05 D9 9B 02 5C 8E 26 3C 03 26 02 -- 041AF0
7C 36 C4 2E 18 73 00 5C ED 94 9A 2E 28 1E DC 2E -- 041B00
D9 9B 02 5C 8E 26 3C 03 26 02 E7 C1 E2 7E 8B 2D -- 041B10
26 02 E7 C1 E2 7E 8B 2D 7C 36 C4 2E 1D D9 9B EE -- 041B20
9A 2E 34 1E DC 2E 9B 05 D9 9B 02 5C 8E 26 3C 03 -- 041B30

E7 C1 E2 7E 8B 2D 7C 36 C4 2E 1B 76 00 5C ED 94 -- 041B40
D9 9B 2E 34 06 DD 2E 9B 02 5C 8E 26 3C 03 26 02 -- 041B50
01 3D 05 8B 2E 18 3E C5 2E FF 15 E9 E2 46 FF 1D -- 041B60
E6 C1 0C 76 8B 2D 74 3E C5 2E 01 0E E9 03 74 00 -- 041B70
24 D8 26 9B 05 D9 9B 0E 7E C5 02 45 8E 35 03 02 -- 041B80
E9 03 7C 04 E2 7E 83 00 00 E2 46 C7 EC 5E D9 9B -- 041B90
26 1E 8E 2E 2E 24 3E 03 2E E7 D1 E2 7E 8B 03 34 -- 041BA0
2D 7C 36 C4 2E 00 C3 E9 03 75 0A 46 23 05 8B 2E -- 041BB0
05 D9 9B 02 5C 8E 26 3C 03 26 02 E7 C1 E2 7E 8B -- 041BC0
00 9E E9 03 74 00 5C ED 94 9A 2E 28 1E DC 2E 9B -- 041BD0
8E 26 3C 03 26 02 E7 C1 E2 7E 8B 2D 74 36 C4 2E -- 041BE0
30 3E C5 2E 1D D9 9B 05 D8 9B EC 46 D9 9B 02 5C -- 041BF0
02 E7 C1 E2 7E 8B D4 5E D9 9B 05 D9 9B 2E 01 FE -- 041C00
2E 9B D4 66 D8 9B 05 D9 9B 02 5C 8E 26 3C 03 26 -- 041C10
2D 74 36 C4 2E 18 73 00 5C ED 94 9A 2E 28 1E DC -- 041C20
EE D9 9B 02 5C 8E 26 3C 03 26 02 E7 C1 E2 7E 8B -- 041C30
03 26 02 E7 C1 E2 7E 8B 2D 74 36 C4 2E 1D D9 9B -- 041C40
94 9A 2E 34 1E DC 2E 9B 05 D9 9B 02 5C 8E 26 3C -- 041C50
02 E7 C1 E2 7E 8B 2D 74 36 C4 2E 1B 76 00 5C ED -- 041C60
1D D9 9B 2E 34 06 DD 2E 9B 02 5C 8E 26 3C 03 26 -- 041C70
00 02 3D 05 8B 2E 18 3E C5 2E FF 15 E9 E2 46 FF -- 041C80
2E D4 5E D9 9B 05 D9 9B 12 7E C5 01 1A E9 03 74 -- 041C90
5C 8E 26 3C 03 26 02 E7 C1 0C 7E 8B 2D 8C 36 C4 -- 041CA0
00 E2 46 C7 EC 5E D9 9B D4 66 D8 9B 05 D9 9B 02 -- 041CB0
2E E7 D1 E2 7E 8B 02 0E E9 03 7C 04 E2 7E 83 00 -- 041CC0
03 75 0A 46 23 05 8B 2E 26 1E 8E 2E 2E 24 3E 03 -- 041CD0
03 26 02 E7 C1 E2 7E 8B 2D 84 36 C4 2E 00 C6 E9 -- 041CE0
94 9A 2E 10 1E DC 2E 9B 05 D9 9B 02 5C 8E 26 3C -- 041CF0
E2 7E 8B 2D 8C 36 C4 2E 00 A1 E9 03 74 00 5C ED -- 041D00
D8 9B EC 46 D9 9B 02 5C 8E 26 3C 03 26 02 E7 C1 -- 041D10
D4 5E D9 9B 05 D9 9B 2E 30 3E C5 2E 1D D9 9B 2D -- 041D20
05 D9 9B 02 5C 8E 26 3C 03 26 02 E7 C1 E2 7E 8B -- 041D30
76 00 5C ED 94 9A 2E 10 1E DC 2E 9B D4 46 D8 9B -- 041D40
26 3C 03 26 02 E7 C1 E2 7E 8B 2D 8C 36 C4 2E 1B -- 041D50
8C 36 C4 2E 1D D9 9B 2E 10 06 DD 2E 9B 02 5C 8E -- 041D60
D9 9B 02 5C 8E 26 3C 03 26 02 E7 C1 E2 7E 8B 2D -- 041D70
C4 2E 1B 73 00 5C ED 94 9A 2E 3C 1E DC 2E 9B 05 -- 041D80
02 5C 8E 26 3C 03 26 02 E7 C1 E2 7E 8B 2D 8C 36 -- 041D90
2E FF 12 E9 E2 46 FF 1D D9 9B 2E 3C 06 DD 2E 9B -- 041DA0
7E C5 01 1A E9 03 74 00 03 3D 05 8B 2E 18 3E C5 -- 041DB0
0C 7E 8B 2D 84 36 C4 2E D4 5E D9 9B 05 D9 9B 0E -- 041DC0
66 D8 9B 05 D9 9B 02 5C 8E 26 3C 03 26 02 E7 C1 -- 041DD0
03 7C 04 E2 7E 83 00 00 E2 46 C7 EC 5E D9 9B D4 -- 041DE0
1E 8E 2E 2E 24 3E 03 2E E7 D1 E2 7E 8B 00 E5 E9 -- 041DF0
C4 2E 00 C6 E9 03 75 0A 46 23 05 8B 2E 26 01 FE -- 041E00
02 5C 8E 26 3C 03 26 02 E7 C1 E2 7E 8B 2D 8C 36 -- 041E10
03 74 00 5C ED 94 9A 2E 10 1E DC 2E 9B 05 D9 9B -- 041E20
03 26 02 E7 C1 E2 7E 8B 2D 84 36 C4 2E 00 A1 E9 -- 041E30
2E 1D D9 9B 2D D8 9B EC 46 D9 9B 02 5C 8E 26 3C -- 041E40
E7 C1 E2 7E 8B D4 5E D9 9B 05 D9 9B 2E 30 3E C5 -- 041E50
```

296

```
9B D4 46 D8 9B 05 D9 9B 02 5C 8E 26 3C 03 26 02 -- 041E60
84 36 C4 2E 1B 76 00 5C ED 94 9A 2E 10 1E DC 2E -- 041E70
2E 9B 02 5C 8E 26 3C 03 26 02 E7 C1 E2 7E 8B 2D -- 041E80
C1 E2 7E 8B 2D 84 36 C4 2E 1D D9 9B 2E 10 06 DD -- 041E90
1E DC 2E 9B 05 D9 9B 02 5C 8E 26 3C 03 26 02 E7 -- 041EA0
7E 8B 2D 84 36 C4 2E 1B 73 00 5C ED 94 9A 2E 3C -- 041EB0
3C 06 DD 2E 9B 02 5C 8E 26 3C 03 26 02 E7 C1 E2 -- 041EC0
83 00 00 E2 46 C7 FF 12 E9 E2 46 FF 1D D9 9B 2E -- 041ED0

3E 03 2E E7 D1 E2 7E 8B 00 D0 E9 03 7C 04 E2 7E -- 041EE0
B1 E9 03 75 0A 46 23 05 8B 2E 26 1E 8E 2E 2E 24 -- 041EF0
76 FF 50 52 20 56 8B 1E 46 03 E0 D1 E2 46 8B 00 -- 041F00
2E 0A C4 83 00 34 23 4C 9A E2 76 FF 16 76 FF 18 -- 041F10
5C 8E 26 3C 03 26 02 E7 C1 E2 7E 8B 2D 94 36 C4 -- 041F20
2E 2E 04 3E 03 2E 02 E7 C1 E2 7E 8B 05 D9 9B 02 -- 041F30
8E 1E 7E 03 E7 D1 E2 7E 8B 1D D9 9B 2E 06 1E 8E -- 041F40
E2 76 FF 1A 76 FF 1C 76 FF 51 75 00 3D 83 20 5E -- 041F50
FF 50 DE 46 8D 16 08 C4 83 00 34 1F 2F 9A 01 6A -- 041F60
0A C4 83 00 34 23 4C 9A E2 76 FF 16 76 FF 18 76 -- 041F70
2E 0A 1E 8E 2E 2E 08 3E 03 2E 02 E7 C1 E2 7E 8B -- 041F80
8E 2E 2E 04 3E 03 2E 02 E7 C1 E2 7E 8B 05 D9 9B -- 041F90
2E 0C 3E C5 2E 0A 46 8B 0A EB 1D D9 9B 2E 06 1E -- 041FA0
56 CB 5E 5F C9 9B C0 2B FF 27 E9 E2 46 FF 05 89 -- 041FB0
9A 37 74 00 3D 83 2E 1C 3E C5 2E 00 00 20 C8 57 -- 041FC0
01 6A 00 6A 00 6A 00 6A 25 75 C0 0B 00 5C 69 2F -- 041FD0
2E 20 3E C5 2E 0A C4 83 00 64 28 52 9A 12 63 68 -- 041FE0
3E C5 2E 0E AB E9 00 01 B8 06 74 00 01 3D 05 89 -- 041FF0
F2 7E 83 00 00 F2 46 C7 00 00 05 C7 2E 1C 01 FE -- 042000
2F 9A 02 6A F2 76 FF 1A 76 FF 1C 76 FF 3E 7D 04 -- 042010
04 3E 03 2E 02 E7 C1 F2 7E 8B 08 C4 83 00 34 1F -- 042020
2E 02 E7 C1 F2 7E 8B 05 D9 9B 2E 06 1E 8E 2E 2E -- 042030
EB F2 46 FF 1D D9 9B 2E 0A 1E 8E 2E 2E 08 3E 03 -- 042040
83 00 00 F2 46 C7 01 60 E9 03 74 00 0C 7E 83 BC -- 042050
3E 03 2E E7 D1 F2 7E 8B 0D 56 E9 03 7C 04 F2 7E -- 042060
33 E9 03 75 0A 46 23 05 8B 2E 26 1E 8E 2E 2E 24 -- 042070
26 3C 03 26 02 E7 C1 F2 7E 8B 2D 64 36 C4 2E 01 -- 042080
F2 7E 8B 1D D9 9B 05 D8 9B 0E 46 DD 9B 02 5C 8E -- 042090
9A 2D A0 1E DC 2E 9B 05 D9 9B 3C 03 26 02 E7 C1 -- 0420A0
E7 C1 F2 7E 8B 2D 64 36 C4 2E 1B 76 00 5C ED 94 -- 0420B0
D9 9B 2D A0 06 DD 2E 9B 02 5C 8E 26 3C 03 26 02 -- 0420C0
26 3C 03 26 02 E7 C1 F2 7E 8B 2D 64 36 C4 2E 1D -- 0420D0
5C ED 94 9A 2E 28 1E DC 2E 9B 05 D9 9B 02 5C 8E -- 0420E0
03 26 02 E7 C1 F2 7E 8B 2D 64 36 C4 2E 18 73 00 -- 0420F0
2D 6C 36 C4 2E 1D D9 9B EE D9 9B 02 5C 8E 26 3C -- 042100
46 DD 9B 02 5C 8E 26 3C 03 26 02 E7 C1 F2 7E 8B -- 042110
3C 03 26 02 E7 C1 F2 7E 8B 1D D9 9B 2D D8 9B 0E -- 042120
1B 73 00 5C ED 94 9A 2D A0 1E DC 2E 9B 05 D9 9B -- 042130
8E 26 3C 03 26 02 E7 C1 F2 7E 8B 2D 6C 36 C4 2E -- 042140
2D 6C 36 C4 2E 1D D9 9B 2D A0 06 DD 2E 9B 02 5C -- 042150
05 D9 9B 02 5C 8E 26 3C 03 26 02 E7 C1 F2 7E 8B -- 042160
36 C4 2E 1B 76 00 5C ED 94 9A 2D C8 1E DC 2E 9B -- 042170
9B 02 5C 8E 26 3C 03 26 02 E7 C1 F2 7E 8B 2D 6C -- 042180
F2 7E 8B 2D 94 36 C4 2E 1D D9 9B 2D C8 06 DD 2E -- 042190
D8 9B 0E 46 DD 9B 02 5C 8E 26 3C 03 26 02 E7 C1 -- 0421A0
03 74 01 0C 7E 83 FE A5 E9 F2 46 FF 1D D9 9B 2D -- 0421B0
ED E9 03 7C 04 F2 7E 83 00 00 F2 46 C7 01 DA E9 -- 0421C0
2E 26 1E 8E 2E 2E 24 3E 03 2E E7 D1 F2 7E 8B 0B -- 0421D0
8B 2D 5C 36 C4 2E 01 AD E9 03 75 0A 46 23 05 8B -- 0421E0
9B 05 D9 9B 02 5C 8E 26 3C 03 26 02 E7 C1 F2 7E -- 0421F0
DC 2E 9B F4 46 D9 9B F4 5E D9 9B 0E 46 DC 01 FE -- 042200
```

297

```
2D AC 06 DD 2E 9B 0A 76 00 5C ED 94 9A 2D AC 1E -- 042210
94 9A 2D B8 1E DC 2E 9B F4 46 D9 9B F4 5E D9 9B -- 042220
2E F4 5E D9 9B 2D B8 06 DD 2E 9B 0A 73 00 5C ED -- 042230
5C 8E 26 3C 03 26 02 E7 C1 F2 7E 8B 2D 5C 36 C4 -- 042240
D9 9B 2D AC 0E DC 2E 9B 25 D8 9B F4 46 D9 9B 02 -- 042250
9B F4 46 D9 9B 3C 03 26 02 E7 C1 F2 7E 8B F8 5E -- 042260
3C 03 26 02 E7 C1 F2 7E 8B 2D 64 36 C4 2E 1D D9 -- 042270

C4 2E 1D D9 9B 05 D8 9B F8 46 D9 9B 02 5C 8E 26 -- 042280
02 5C 8E 26 3C 03 26 02 E7 C1 F2 7E 8B 2D 6C 36 -- 042290
8B 2D 64 36 C4 2E 1D D9 9B 05 D8 9B F8 46 D9 9B -- 0422A0
9B 05 D9 9B 02 5C 8E 26 3C 03 26 02 E7 C1 F2 7E -- 0422B0
64 36 C4 2E 1A 76 00 5C ED 94 9A 2D A0 1E DC 2E -- 0422C0
2E 9B 02 5C 8E 26 3C 03 26 02 E7 C1 F2 7E 8B 2D -- 0422D0
E7 C1 F2 7E 8B 2D 64 36 C4 2E 37 EB 2D A0 06 DD -- 0422E0
28 1E DC 2E 9B 05 D9 9B 02 5C 8E 26 3C 03 26 02 -- 0422F0
F2 7E 8B 2D 64 36 C4 2E 18 73 00 5C ED 94 9A 2E -- 042300
1D D9 9B EE D9 9B 02 5C 8E 26 3C 03 26 02 E7 C1 -- 042310
8E 26 3C 03 26 02 E7 C1 F2 7E 8B 2D 6C 36 C4 2E -- 042320
00 5C ED 94 9A 2D C8 1E DC 2E 9B 05 D9 9B 02 5C -- 042330
3C 03 26 02 E7 C1 F2 7E. 8B 2D 6C 36 C4 2E 1A 76 -- 042340
6C 36 C4 2E 3A EB 2D C8 06 DD 2E 9B 02 5C 8E 26 -- 042350
D9 9B 02 5C 8E 26 3C 03 26 02 E7 C1 F2 7E 8B 2D -- 042360
C4 2E 1B 73 00 5C ED 94 9A 2D A0 1E DC 2E 9B 05 -- 042370
02 5C 8E 26 3C 03 26 02 E7 C1 F2 7E 8B 2D 6C 36 -- 042380
83 FE 2B E9 F2 46 FF 1D D9 9B 2D A0 06 DD 2E 9B -- 042390
F2 7E 83 00 00 F2 46 C7 00 B7 E9 03 74 03 0C 7E -- 0423A0
2E 24 3E 03 2E E7 D1 F2 7E 8B 0A 0A E9 03 7C 04 -- 0423B0
2E 00 8A E9 03 75 0A 46 23 05 8B 2E 26 1E 8E 2E -- 0423C0
5C 8E 26 3C 03 26 02 E7 C1 F2 7E 8B 2D 64 36 C4 -- 0423D0
E7 C1 F2 7E 8B 1D D9 9B 05 D8 9B 0E 46 DD 9B 02 -- 0423E0
ED 94 9A 2D A0 1E DC 2E 9B 05 D9 9B 3C 03 26 02 -- 0423F0
E7 C1 F2 7E 8B 2D 64 36 C4 2E 1B 76 00 5C 01 FE -- 042400
D9 9B 2D A0 06 DD 2E 9B 02 5C 8E 26 3C 03 26 02 -- 042410
26 3C 03 26 02 E7 C1 F2 7E 8B 2D 64 36 C4 2E 1D -- 042420
5C ED 94 9A 2E 28 1E DC 2E 9B 05 D9 9B 02 5C 8E -- 042430
03 26 02 E7 C1 F2 7E 8B 2D 64 36 C4 2E 18 73 00 -- 042440
4E E9 F2 46 FF 1D D9 9B EE D9 9B 02 5C 8E 26 3C -- 042450
83 00 00 F2 46 C7 00 BA E9 03 74 02 0C 7E 83 FF -- 042460
3E 03 2E E7 D1 F2 7E 8B 09 4A E9 03 7C 04 F2 7E -- 042470
8D E9 03 75 0A 46 23 05 8B 2E 26 1E 8E 2E 2E 24 -- 042480
26 3C 03 26 02 E7 C1 F2 7E 8B 2D 6C 36 C4 2E 00 -- 042490
F2 7E 8B 1D D9 9B 05 D8 9B 0E 46 DD 9B 02 5C 8E -- 0424A0
9A 2D C8 1E DC 2E 9B 05 D9 9B 3C 03 26 02 E7 C1 -- 0424B0
E7 C1 F2 7E 8B 2D 6C 36 C4 2E 1B 76 00 5C ED 94 -- 0424C0
D9 9B 2D C8 06 DD 2E 9B 02 5C 8E 26 3C 03 26 02 -- 0424D0
26 3C 03 26 02 E7 C1 F2 7E 8B 2D 6C 36 C4 2E 1D -- 0424E0
5C ED 94 9A 2D A0 1E DC 2E 9B 05 D9 9B 02 5C 8E -- 0424F0
03 26 02 E7 C1 F2 7E 8B 2D 6C 36 C4 2E 1B 73 00 -- 042500
46 FF 1D D9 9B 2D A0 06 DD 2E 9B 02 5C 8E 26 3C -- 042510
F2 46 C7 01 68 E9 03 74 05 0C 7E 83 FF 4B E9 F2 -- 042520
E7 D1 F2 7E 8B 08 87 E9 03 7C 04 F2 7E 83 00 00 -- 042530
75 0A 46 23 05 8B 2E 26 1E 8E 2E 2E 24 3E 03 2E -- 042540
26 02 E7 C1 F2 7E 8B 2D 74 36 C4 2E 01 3B E9 03 -- 042550
36 C4 2E E8 5E D9 9B 05 D9 9B 02 5C 8E 26 3C 03 -- 042560
9B 02 5C 8E 26 3C 03 26 02 E7 C1 F2 7E 8B 2D 7C -- 042570
C4 2E FC 5E D9 9B 0E 46 DC 9B E8 66 D8 9B 05 D9 -- 042580
02 5C 8E 26 3C 03 26 02 E7 C1 F2 7E 8B 2D 74 36 -- 042590
E7 C1 F2 7E 8B 2D 7C 36 C4 2E 1D D9 9B EE D9 9B -- 0425A0
D9 9B 1D D9 9B EE D9 9B 02 5C 8E 26 3C 03 26 02 -- 0425B0
```

298

```
2E 19 76 00 5C ED 94 9A 2E 28 1E DC 2E 9B FC 46 -- 0425C0
5C 8E 26 3C 03 26 02 E7 C1 F2 7E 8B 2D 7C 36 C4 -- 0425D0
1E DC 2E 9B FC 46 D9 9B 1D D9 9B FC 46 D9 9B 02 -- 0425E0
7E 8B 2D 74 36 C4 2E 1C 73 00 5C ED 94 9A 2E 28 -- 0425F0
46 D9 9B 02 5C 8E 26 3C 03 26 02 E7 C1 F2 01 FE -- 042600
C1 F2 7E 8B 2D 74 36 C4 2E 1D D9 9B E0 D9 9B FC -- 042610

1E DC 2E 9B 05 D9 9B 02 5C 8E 26 3C 03 26 02 E7 -- 042620
7E 8B 2D 74 36 C4 2E 1B 76 00 5C ED 94 9A 2E 34 -- 042630
34 06 DD 2E 9B 02 5C 8E 26 3C 03 26 02 E7 C1 F2 -- 042640
26 02 E7 C1 F2 7E 8B 2D 7C 36 C4 2E 1D D9 9B 2E -- 042650
9A 2E 34 1E DC 2E 9B 05 D9 9B 02 5C 8E 26 3C 03 -- 042660
E7 C1 F2 7E 8B 2D 7C 36 C4 2E 1B 76 00 5C ED 94 -- 042670
D9 9B 2E 34 06 DD 2E 9B 02 5C 8E 26 3C 03 26 02 -- 042680
01 77 E9 03 74 04 0C 7E 83 FE 9D E9 F2 46 FF 1D -- 042690
7E 8B 07 16 E9 03 7C 04 F2 7E 83 00 00 F2 46 C7 -- 0426A0
23 05 8B 2E 26 1E 8E 2E 2E 24 3E 03 2E E7 D1 F2 -- 0426B0
C1 F2 7E 8B 2D 84 36 C4 2E 01 4A E9 03 75 0A 46 -- 0426C0
E8 5E D9 9B 05 D9 9B 02 5C 8E 26 3C 03 26 02 E7 -- 0426D0
8E 26 3C 03 26 02 E7 C1 F2 7E 8B 2D 8C 36 C4 2E -- 0426E0
5E D9 9B 0E 46 DC 9B E8 66 D8 9B 05 D9 9B 02 5C -- 0426F0
26 3C 03 26 02 E7 C1 F2 7E 8B 2D 84 36 C4 2E FC -- 042700
8C 36 C4 2E 1D D9 9B 2E 10 06 DD 2E 9B 02 5C 8E -- 042710
2E 9B 02 5C 8E 26 3C 03 26 02 E7 C1 F2 7E 8B 2D -- 042720
28 1E DC 2E 9B FC 46 D9 9B 1D D9 9B 2E 10 06 DD -- 042730
F2 7E 8B 2D 84 36 C4 2E 1F 76 00 5C ED 94 9A 2E -- 042740
2E 10 06 DD 2E 9B 02 5C 8E 26 3C 03 26 02 E7 C1 -- 042750
28 1E DC 2E 9B FC 46 D9 9B 1D D9 9B FC 66 D8 9B -- 042760
F2 7E 8B 2D 8C 36 C4 2E 1F 73 00 5C ED 94 9A 2E -- 042770
2E 9B FC 46 D9 9B 02 5C 8E 26 3C 03 26 02 E7 C1 -- 042780
C1 F2 7E 8B 2D 84 36 C4 2E 1D D9 9B 2E 10 06 DC -- 042790
1E DC 2E 9B 05 D9 9B 02 5C 8E 26 3C 03 26 02 E7 -- 0427A0
7E 8B 2D 84 36 C4 2E 1B 73 00 5C ED 94 9A 2E 3C -- 0427B0
3C 06 DD 2E 9B 02 5C 8E 26 3C 03 26 02 E7 C1 F2 -- 0427C0
26 02 E7 C1 F2 7E 8B 2D 8C 36 C4 2E 1D D9 9B 2E -- 0427D0
9A 2E 3C 1E DC 2E 9B 05 D9 9B 02 5C 8E 26 3C 03 -- 0427E0
E7 C1 F2 7E 8B 2D 8C 36 C4 2E 1B 73 00 5C ED 94 -- 0427F0
2E 3C 06 DD 2E 9B 02 5C 8E 26 3C 03 26 02 01 FE -- 042800
E9 03 74 06 0C 7E 83 FE 8E E9 F2 46 FF 1D D9 9B -- 042810
01 5A E9 03 7C 04 F2 7E 83 00 00 F2 46 C7 02 DF -- 042820
8B 2E 26 1E 8E 2E 2E 24 3E 03 2E E7 D1 F2 7E 8B -- 042830
7E 8B 2D 74 36 C4 2E 01 3B E9 03 75 0A 46 23 05 -- 042840
D9 9B 05 D9 9B 02 5C 8E 26 3C 03 26 02 E7 C1 F2 -- 042850
3C 03 26 02 E7 C1 F2 7E 8B 2D 7C 36 C4 2E E8 5E -- 042860
9B 0E 46 DC 9B E8 66 D8 9B 05 D9 9B 02 5C 8E 26 -- 042870
03 26 02 E7 C1 F2 7E 8B 2D 74 36 C4 2E FC 5E D9 -- 042880
2D 7C 36 C4 2E 1D D9 9B EE D9 9B 02 5C 8E 26 3C -- 042890
EE D9 9B 02 5C 8E 26 3C 03 26 02 E7 C1 F2 7E 8B -- 0428A0
ED 94 9A 2E 28 1E DC 2E 9B FC 46 D9 9B 1D D9 9B -- 0428B0
26 02 E7 C1 F2 7E 8B 2D 7C 36 C4 2E 19 76 00 5C -- 0428C0
46 D9 9B 1D D9 9B FC 46 D9 9B 02 5C 8E 26 3C 03 -- 0428D0
C4 2E 1C 73 00 5C ED 94 9A 2E 28 1E DC 2E 9B FC -- 0428E0
02 5C 8E 26 3C 03 26 02 E7 C1 F2 7E 8B 2D 74 36 -- 0428F0
8B 2D 74 36 C4 2E 1D D9 9B E0 D9 9B FC 46 D9 9B -- 042900
9B 05 D9 9B 02 5C 8E 26 3C 03 26 02 E7 C1 F2 7E -- 042910
74 36 C4 2E 1B 76 00 5C ED 94 9A 2E 34 1E DC 2E -- 042920
2E 9B 02 5C 8E 26 3C 03 26 02 E7 C1 F2 7E 8B 2D -- 042930
C1 F2 7E 8B 2D 7C 36 C4 2E 1D D9 9B 2E 34 06 DD -- 042940
1E DC 2E 9B 05 D9 9B 02 5C 8E 26 3C 03 26 02 E7 -- 042950
7E 8B 2D 7C 36 C4 2E 1B 76 00 5C ED 94 9A 2E 34 -- 042960
```

```
34 06 DD 2E 9B 02 5C 8E 26 3C 03 26 02 E7 C1 F2 -- 042970
83 00 00 F2 46 C7 FE 9D E9 F2 46 FF 1D D9 9B 2E -- 042980
3E 03 2E E7 D1 F2 7E 8B 04 2E E9 03 7C 04 F2 7E -- 042990
4A E9 03 75 0A 46 23 05 8B 2E 26 1E 8E 2E 2E 24 -- 0429A0
26 3C 03 26 02 E7 C1 F2 7E 8B 2D 84 36 C4 2E 01 -- 0429B0

8B 2D 8C 36 C4 2E E8 5E D9 9B 05 D9 9B 02 5C 8E -- 0429C0
9B 05 D9 9B 02 5C 8E 26 3C 03 26 02 E7 C1 F2 7E -- 0429D0
2D 84 36 C4 2E FC 5E D9 9B 0E 46 DC 9B E8 66 D8 -- 0429E0
DD 2E 9B 02 5C 8E 26 3C 03 26 02 E7 C1 F2 7E 8B -- 0429F0
F2 7E 8B 2D 8C 36 C4 2E 1D D9 9B 2E 10 06 01 FE -- 042A00
2E 10 06 DD 2E 9B 02 5C 8E 26 3C 03 26 02 E7 C1 -- 042A10
ED 94 9A 2E 28 1E DC 2E 9B FC 46 D9 9B 1D D9 9B -- 042A20
26 02 E7 C1 F2 7E 8B 2D 84 36 C4 2E 1F 76 00 5C -- 042A30
FC 66 D8 9B 2E 10 06 DD 2E 9B 02 5C 8E 26 3C 03 -- 042A40
ED 94 9A 2E 28 1E DC 2E 9B FC 46 D9 9B 1D D9 9B -- 042A50
26 02 E7 C1 F2 7E 8B 2D 8C 36 C4 2E 1F 73 00 5C -- 042A60
2E 10 06 DC 2E 9B FC 46 D9 9B 02 5C 8E 26 3C 03 -- 042A70
03 26 02 E7 C1 F2 7E 8B 2D 84 36 C4 2E 1D D9 9B -- 042A80
94 9A 2E 3C 1E DC 2E 9B 05 D9 9B 02 5C 8E 26 3C -- 042A90
02 E7 C1 F2 7E 8B 2D 84 36 C4 2E 1B 73 00 5C ED -- 042AA0
1D D9 9B 2E 3C 06 DD 2E 9B 02 5C 8E 26 3C 03 26 -- 042AB0
8E 26 3C 03 26 02 E7 C1 F2 7E 8B 2D 8C 36 C4 2E -- 042AC0
00 5C ED 94 9A 2E 3C 1E DC 2E 9B 05 D9 9B 02 5C -- 042AD0
3C 03 26 02 E7 C1 F2 7E 8B 2D 8C 36 C4 2E 1B 73 -- 042AE0
F2 46 FF 1D D9 9B 2E 3C 06 DD 2E 9B 02 5C 8E 26 -- 042AF0
00 F2 46 C7 02 BC E9 03 74 07 0C 7E 83 FE 8E E9 -- 042B00
2E E7 D1 F2 7E 8B 02 AE E9 03 7C 04 F2 7E 83 00 -- 042B10
03 75 0A 46 23 05 8B 2E 26 1E 8E 2E 2E 24 3E 03 -- 042B20
03 26 02 E7 C1 F2 7E 8B 2D 64 36 C4 2E 02 8F E9 -- 042B30
6C 36 C4 2E E8 5E D9 9B 05 D9 9B 02 5C 8E 26 3C -- 042B40
D9 9B 02 5C 8E 26 3C 03 26 02 E7 C1 F2 7E 8B 2D -- 042B50
A0 0E DC 2E 9B 2D A0 26 DC 2E 9B E8 66 D8 9B 05 -- 042B60
7E 8B 2E 44 36 C4 2E 1D D9 9B 2E 44 3E C5 2E 2D -- 042B70
D9 9B 2E 06 1E 8E 2E 2E 04 3E 03 2E 02 E7 C1 F2 -- 042B80
E9 00 02 B8 06 75 00 5C ED 94 9A 1C D8 26 9B 05 -- 042B90
3E 03 2E 02 E7 C1 F2 7E 8B 2E 44 36 C4 2E 03 12 -- 042BA0
94 9A 1C D8 26 9B 05 D9 9B 2E 06 1E 8E 2E 2E 04 -- 042BB0
5E D9 9B 05 D9 9B 2E 44 3E C5 2E 30 73 00 5C ED -- 042BC0
26 3C 03 26 02 E7 C1 F2 7E 8B 2D 94 36 C4 2E E8 -- 042BD0
94 9A E8 5E D8 9B 0E 66 DC 9B 05 D9 9B 02 5C 8E -- 042BE0
02 E7 C1 F2 7E 8B 2E 44 36 C4 2E 53 77 00 5C ED -- 042BF0
9B 05 D9 9B 2E 06 1E 8E 2E 2E 04 3E 03 2E 01 FE -- 042C00
9B 2E 44 3E C5 2E 7F 76 00 5C ED 94 9A 1C D8 26 -- 042C10
E7 C1 F2 7E 8B 2D 94 36 C4 2E E0 5E D9 9B 05 D9 -- 042C20
9B 0E 66 DC 9B 05 D9 9B 02 5C 8E 26 3C 03 26 02 -- 042C30
9B 2E 44 3E C5 2E 4F 73 00 5C ED 94 9A E0 5E D8 -- 042C40
E7 C1 F2 7E 8B 2D 94 36 C4 2E E8 5E D9 9B 05 D9 -- 042C50
9A E8 5E D8 9B 05 D9 9B 02 5C 8E 26 3C 03 26 02 -- 042C60
44 3E C5 2E 02 3A E9 00 03 B8 06 75 00 5C ED 94 -- 042C70
26 02 E7 C1 F2 7E 8B 2D 94 36 C4 2E 05 D9 9B 2E -- 042C80
7E 8B 2E 44 36 C4 2E 01 28 E9 02 5C 8E 26 3C 03 -- 042C90
D9 9B 2E 06 1E 8E 2E 2E 04 3E 03 2E 02 E7 C1 F2 -- 042CA0
C1 F2 7E 8B 3B 73 00 5C ED 94 9A 1C D8 26 9B 05 -- 042CB0
9B 05 D9 9B 2E 06 1E 8E 2E 2E 04 3E 03 2E 02 E7 -- 042CC0
03 26 02 E7 C1 F2 7E 8B 2D 94 36 C4 2E E8 5E D9 -- 042CD0
E8 5E D8 9B 0E 66 DC 9B 05 D9 9B 02 5C 8E 26 3C -- 042CE0
C1 F2 7E 8B 2E 44 36 C4 2E 61 72 00 5C ED 94 9A -- 042CF0
9B 05 D9 9B 2E 06 1E 8E 2E 2E 04 3E 03 2E 02 E7 -- 042D00
F2 7E 8B 00 8B E9 03 77 00 5C ED 94 9A 1C D8 26 -- 042D10
```

300

```
05 D9 9B 2E 06 1E 8E 2E 2E 04 3E 03 2E 02 E7 C1 -- 042D20
26 02 E7 C1 F2 7E 8B 2D 94 36 C4 2E E0 5E D9 9B -- 042D30
5E D8 9B 0E 66 DC 9B 05 D9 9B 02 5C 8E 26 3C 03 -- 042D40
03 2E 02 E7 C1 F2 7E 8B 50 76 00 5C ED 94 9A E0 -- 042D50

2E E8 5E D9 9B 05 D9 9B 2E 06 1E 8E 2E 2E 04 3E -- 042D60
5C 8E 26 3C 03 26 02 E7 C1 F2 7E 8B 2D 94 36 C4 -- 042D70
B8 06 75 00 5C ED 94 9A E8 5E D8 9B 05 D9 9B 02 -- 042D80
2E 04 3E 03 2E 02 E7 C1 F2 7E 8B 01 21 E9 00 04 -- 042D90
F2 7E 8B 2D 94 36 C4 2E FE D9 E9 2E 06 1E 8E 2E -- 042DA0
D8 9B 0E 46 DD 9B 02 5C 8E 26 3C 03 26 02 E7 C1 -- 042DB0
83 00 00 F2 46 C7 FD 49 E9 F2 46 FF 1D D9 9B 2D -- 042DC0
3E 03 2E E7 D1 F2 7E 8B 00 DC E9 03 7C 04 F2 7E -- 042DD0
BD E9 03 75 0A 46 23 05 8B 2E 26 1E 8E 2E 2E 24 -- 042DE0
76 FF 50 52 20 56 8B 1E 46 03 E0 D1 F2 46 8B 00 -- 042DF0
C4 83 00 34 23 4C 9A F2 76 FF 16 76 FF 18 01 FE -- 042E00
C1 F2 7E 8B 2D 94 36 C4 2E 28 74 07 0C 7E 83 0A -- 042E10
C1 F2 7E 8B 05 D9 9B 02 5C 8E 26 3C 03 26 02 E7 -- 042E20
8B 1D D9 9B 2E 06 1E 8E 2E 2E 04 3E 03 2E 02 E7 -- 042E30
FF 57 75 00 3D 83 20 5E 8E 1E 7E 03 E7 D1 F2 7E -- 042E40
83 00 34 1F 2F 9A 01 6A F2 76 FF 1A 76 FF 1C 76 -- 042E50
F2 76 FF 16 76 FF 18 76 FF 50 F0 46 8D 16 08 C4 -- 042E60
7E 8B 32 74 07 0C 7E 83 0A C4 83 00 34 23 4C 9A -- 042E70
D9 9B 2E 0A 1E 8E 2E 2E 08 3E 03 2E 02 E7 C1 F2 -- 042E80
06 1E 8E 2E 2E 04 3E 03 2E 02 E7 C1 F2 7E 8B 05 -- 042E90
05 89 2E 0C 3E C5 2E 0A 46 8B 0A EB 1D D9 9B 2E -- 042EA0
C8 57 56 CB 5E 5F C9 9B C0 2B FF 1B E9 F2 46 FF -- 042EB0
0A 7E 83 FC 5E D9 9B 05 D9 9B 0C 7E C5 00 00 04 -- 042EC0
8E 2E 2D C0 3E 03 2E 03 E7 C1 10 7E 8B 42 75 01 -- 042ED0
77 00 5C ED 94 9A FC 5E D8 9B 05 D9 9B 2D C2 1E -- 042EE0
C2 1E 8E 2E 2D C0 3E 03 2E 03 E7 C1 10 7E 8B 24 -- 042EF0
05 77 00 5C ED 94 9A 04 5D D8 9B FC 46 D9 9B 2D -- 042F00
E7 C1 10 7E 8B 3D 75 02 0A 7E 83 45 EB 00 01 B8 -- 042F10
D8 9B 05 D9 9B 2E 02 1E 8E 2E 2E 00 3E 03 2E 03 -- 042F20
2E 03 E7 C1 10 7E 8B 1F 77 00 5C ED 94 9A FC 5E -- 042F30
5D D8 9B FC 46 D9 9B 2E 02 1E 8E 2E 2E 00 3E 03 -- 042F40
56 CB 5E 5F C9 9B C0 2B B8 76 00 5C ED 94 9A 04 -- 042F50
56 8B 0E 46 03 05 E0 C1 0C 46 8B 00 00 04 C8 57 -- 042F60
00 F4 E9 03 74 01 0A 7E 83 FE 56 89 FC 46 89 10 -- 042F70
8B 2D 74 36 C4 2E 05 D9 9B 04 FC 46 83 FC 7E C5 -- 042F80
C5 1D D9 9B 02 5C 8E 26 3C 03 26 02 E7 C1 0C 7E -- 042F90
7E 8B 2D 7C 36 C4 2E 05 D9 9B 04 FC 46 83 FC 7E -- 042FA0
7E C5 1D D9 9B 02 5C 8E 26 3C 03 26 02 E7 C1 0C -- 042FB0
0C 7E 8B 2D 84 36 C4 2E 05 D9 9B 04 FC 46 83 FC -- 042FC0
FC 7E C5 1D D9 9B 02 5C 8E 26 3C 03 26 02 E7 C1 -- 042FD0
C1 0C 7E 8B 2D 8C 36 C4 2E 05 D9 9B 04 FC 46 83 -- 042FE0
83 FC 7E C5 1D D9 9B 02 5C 8E 26 3C 03 26 02 E7 -- 042FF0
0C 7E 8B 2D 5C 36 C4 2E 05 D9 9B 04 FC 46 01 FE -- 043000
FC 7E C5 1D D9 9B 02 5C 8E 26 3C 03 26 02 E7 C1 -- 043010
C1 0C 7E 8B 2D 64 36 C4 2E 05 D9 9B 04 FC 46 83 -- 043020
83 FC 7E C5 1D D9 9B 02 5C 8E 26 3C 03 26 02 E7 -- 043030
E7 C1 0C 7E 8B 2D 6C 36 C4 2E 05 D9 9B 04 FC 46 -- 043040
D9 9B FC 7E C5 1D D9 9B 02 5C 8E 26 3C 03 26 02 -- 043050
26 3C 03 26 02 E7 C1 0C 7E 8B 2D 94 36 C4 2E 05 -- 043060
2E 00 F4 E9 03 74 02 0A 7E 83 1D D9 9B 02 5C 8E -- 043070
5C 8E 26 3C 03 26 02 E7 C1 0C 7E 8B 2D 74 36 C4 -- 043080
C4 2E 1D D9 9B 04 FC 46 83 FC 7E C5 05 D9 9B 02 -- 043090
02 5C 8E 26 3C 03 26 02 E7 C1 0C 7E 8B 2D 7C 36 -- 0430A0
36 C4 2E 1D D9 9B 04 FC 46 83 FC 7E C5 05 D9 9B -- 0430B0
9B 02 5C 8E 26 3C 03 26 02 E7 C1 0C 7E 8B 2D 84 -- 0430C0
```

301

```
8C 36 C4 2E 1D D9 9B 04 FC 46 83 FC 7E C5 05 D9 -- 0430D0
D9 9B 02 5C 8E 26 3C 03 26 02 E7 C1 0C 7E 8B 2D -- 0430E0
2D 5C 36 C4 2E 1D D9 9B 04 FC 46 83 FC 7E C5 05 -- 0430F0

05 D9 9B 02 5C 8E 26 3C 03 26 02 E7 C1 0C 7E 8B -- 043100
8B 2D 64 36 C4 2E 1D D9 9B 04 FC 46 83 FC 7E C5 -- 043110
C5 05 D9 9B 02 5C 8E 26 3C 03 26 02 E7 C1 0C 7E -- 043120
7E 8B 2D 6C 36 C4 2E 1D D9 9B 04 FC 46 83 FC 7E -- 043130
7E C5 05 D9 9B 02 5C 8E 26 3C 03 26 02 E7 C1 0C -- 043140
0C 7E 8B 2D 94 36 C4 2E 1D D9 9B 04 FC 46 83 FC -- 043150
FC 7E C5 05 D9 9B 02 5C 8E 26 3C 03 26 02 E7 C1 -- 043160
00 00 02 C8 57 56 CB 5E 5F C9 9B C0 2B 1D D9 9B -- 043170
76 FF 0E 76 FF 18 7D 04 FE 7E 83 00 00 FE 46 C7 -- 043180
46 FF 08 C4 83 00 34 1F 2F 9A 02 6A FE 76 FF 0C -- 043190
20 E9 03 7C 04 FE 7E 83 00 00 FE 46 C7 E2 EB FE -- 0431A0
2E 26 1E 8E 2E 2E 24 3E 03 2E E7 D1 FE 7E 8B 01 -- 0431B0
8B 2D 74 36 C4 2E 01 01 E9 03 75 0A 46 23 05 8B -- 0431C0
9B EE D9 9B 02 5C 8E 26 3C 03 26 02 E7 C1 FE 7E -- 0431D0
3C 03 26 02 E7 C1 FE 7E 8B 2D 7C 36 C4 2E 1D D9 -- 0431E0
8B 2D 84 36 C4 2E 1D D9 9B EE D9 9B 02 5C 8E 26 -- 0431F0
2E 9B 02 5C 8E 26 3C 03 26 02 E7 C1 FE 7E 01 FE -- 043200
C1 FE 7E 8B 2D 8C 36 C4 2E 1D D9 9B 2E 10 06 DD -- 043210
9B 2E 10 06 DD 2E 9B 02 5C 8E 26 3C 03 26 02 E7 -- 043220
8B 2D 64 36 C4 2E 05 D9 9B 2D B4 3E C5 2E 1D D9 -- 043230
2E 1D D9 9B 02 5C 8E 26 3C 03 26 02 E7 C1 FE 7E -- 043240
C1 FE 7E 8B 2D 5C 36 C4 2E 05 D9 9B 2D 9C 3E C5 -- 043250
A8 3E C5 2E 1D D9 9B 02 5C 8E 26 3C 03 26 02 E7 -- 043260
26 02 E7 C1 FE 7E 8B 2D 6C 36 C4 2E 05 D9 9B 2D -- 043270
7E 8B 2D 94 36 C4 2E 1D D9 9B 02 5C 8E 26 3C 03 -- 043280
D9 9B EE D9 9B 02 5C 8E 26 3C 03 26 02 E7 C1 FE -- 043290
06 1E 8E 2E 2E 04 3E 03 2E 02 E7 C1 FE 7E 8B 1D -- 0432A0
3E 03 2E 02 E7 C1 FE 7E 8B 1D D9 9B EE D9 9B 2E -- 0432B0
FE 46 FF 1D D9 9B EE D9 9B 2E 0A 1E 8E 2E 2E 08 -- 0432C0
3E C5 2E 05 89 2E 0C 3E C5 2E 0A 46 8B FE D7 E9 -- 0432D0
C8 57 56 CB 5E 5F C9 9B C0 2B 00 00 05 C7 2E 1C -- 0432E0
C4 2E 6F 7D 04 FC 7E 83 00 00 FC 46 C7 00 00 04 -- 0432F0
1E 8E 2E 2E 24 3E 03 2E E7 D1 FC 7E 8B 2E 0C 36 -- 043300
FF 0E 76 FF 10 76 FF 4F 74 04 23 26 05 8B 2E 26 -- 043310
FE 46 8D 16 08 C4 83 00 34 1F 2F 9A 01 6A FC 76 -- 043320
83 00 34 23 4C 9A FC 76 FF 0A 76 FF 0C 76 FF 50 -- 043330
1E 8E 2E 2E 08 3E 03 2E 02 E7 C1 FC 7E 8B 0A C4 -- 043340
2E 04 3E 03 2E 02 E7 C1 FC 7E 8B 05 D9 9B 2E 0A -- 043350
3E C5 2E 8B EB FC 46 FF 1D D9 9B 2E 06 1E 8E 2E -- 043360
CB 5E 5F C9 9B C0 2B 05 89 12 7E C5 05 8B 2E 0C -- 043370
B2 5E D9 9B 2E 48 06 DD 2E 9B 00 00 AE C8 57 56 -- 043380
2E 50 06 DD 2E 9B AE 5E D9 9B 2E 34 06 DD 2E 9B -- 043390
E7 C1 0A 7E 8B 00 00 05 C7 10 7E C5 AA 5E D9 9B -- 0433A0
0A 7E 8B FF 74 86 89 05 8B 0E 5E 8E 0C 7E 03 09 -- 0433B0
FF 72 86 89 05 8B 0C 7E 03 00 80 C7 81 09 E7 C1 -- 0433C0
89 05 8B 0C 7E 03 01 00 C7 81 09 E7 C1 0A 7E 8B -- 0433D0
0C 7E 03 01 80 C7 81 09 E7 C1 0A 7E 8B FF 70 86 -- 0433E0
01 FE C7 81 09 E7 C1 0A 7E 8B FF 6E 86 89 05 8B -- 0433F0
E0 C1 0A 46 8B FF 6C 86 89 05 8B 0C 7E 03 01 FE -- 043400
36 C4 2E A8 56 89 A6 46 89 0E 56 8B 0C 46 03 09 -- 043410
9B 02 5C 8E 26 3C 03 26 02 E7 C1 0A 7E 8B 2D 74 -- 043420
89 08 C4 83 00 5C ED F9 9A 00 5C ED 99 9A 05 D9 -- 043430
3C 03 26 02 E7 C1 0A 7E 8B 2D 7C 36 C4 2E FE 46 -- 043440
5C ED F9 9A 00 5C ED 99 9A 05 D9 9B 02 5C 8E 26 -- 043450
C1 0A 7E 8B 2D 84 36 C4 2E FA 46 89 08 C4 83 00 -- 043460
5C ED 99 9A 05 D9 9B 02 5C 8E 26 3C 03 26 02 E7 -- 043470
```

```
8C  36  C4  2E  FC  46  89  08  C4  83  00  5C  ED  F9  9A  00  --  043480
D9  9B  02  5C  8E  26  3C  03  26  02  E7  C1  0A  7E  8B  2D  --  043490
46  89  08  C4  83  00  5C  ED  F9  9A  00  5C  ED  99  9A  05  --  0434A0
26  3C  03  26  02  E7  C1  0A  7E  8B  2D  5C  36  C4  2E  F8  --  0434B0
8B  2D  64  36  C4  2E  F4  5E  D9  9B  05  D9  9B  02  5C  8E  --  0434C0
9B  05  D9  9B  02  5C  8E  26  3C  03  26  02  E7  C1  0A  7E  --  0434D0
03  26  02  E7  C1  0A  7E  8B  2D  6C  36  C4  2E  F0  5E  D9  --  0434E0
94  36  C4  2E  EC  5E  D9  9B  05  D9  9B  02  5C  8E  26  3C  --  0434F0
D9  9B  02  5C  8E  26  3C  03  26  02  E7  C1  0A  7E  8B  2D  --  043500
9A  2D  A0  1E  DC  2E  9B  F0  46  D9  9B  E8  5E  D9  9B  05  --  043510
2E  28  1E  DC  2E  9B  F0  46  D9  9B  14  77  00  5C  ED  94  --  043520
05  0E  E9  00  01  B8  04  EC  E9  03  72  00  5C  ED  94  9A  --  043530
9B  E8  4E  D8  9B  2E  58  06  DF  2E  9B  00  00  C6  46  C7  --  043540
2E  58  06  DF  2E  9B  FF  5A  9E  DD  9B  2D  A0  06  DC  2E  --  043550
9B  FF  62  9E  DD  9B  2D  A0  06  DC  2E  9B  E8  4E  D8  9B  --  043560
9B  FF  5A  8E  DC  9B  FF  62  8E  DC  9B  2E  58  06  DF  2E  --  043570
C1  F8  46  8B  A2  46  89  06  E0  C1  FA  46  8B  D4  5E  D9  --  043580
46  8B  9E  46  89  A2  46  8B  A0  46  89  00  1F  05  06  E0  --  043590
5E  D9  9B  02  C4  83  00  5C  ED  A7  9A  50  FA  46  2B  F8  --  0435A0
46  D9  9B  96  5E  D9  9B  9A  4E  D8  9B  B2  46  D9  9B  9A  --  0435B0
7E  83  00  00  C8  46  C7  92  5E  D9  9B  9A  4E  D8  9B  AA  --  0435C0
00  B3  E9  03  74  00  C8  7E  83  04  44  E9  03  7C  02  C8  --  0435D0
F7  2E  99  40  FC  46  03  FE  46  8B  D0  46  89  FE  46  8B  --  0435E0
58  06  DF  2E  9B  00  01  CC  46  C7  CE  46  89  2E  58  3E  --  0435F0
06  DF  2E  9B  FF  5A  9E  DD  9B  D4  4E  D8  9B  2E  01  FE  --  043600
5A  06  DF  2E  9B  FF  62  9E  DD  9B  F4  4E  D8  9B  2E  5C  --  043610
9B  FF  5A  86  DC  9B  FF  62  A6  DC  9B  F0  4E  D8  9B  2E  --  043620
9E  DD  9B  D4  4E  D8  9B  2E  62  06  DF  2E  9B  E4  5E  D9  --  043630
62  9E  DD  9B  F4  4E  D8  9B  2E  60  06  DF  2E  9B  FF  5A  --  043640
FF  62  86  DC  9B  F0  4E  D8  9B  2E  5E  06  DF  2E  9B  FF  --  043650
9B  2E  64  06  DF  2E  9B  E0  5E  D9  9B  FF  5A  A6  DC  9B  --  043660
D8  9B  2E  5A  06  DF  2E  9B  FF  62  9E  DD  9B  F4  4E  D8  --  043670
9B  DC  5E  D9  9B  D4  46  D8  9B  FF  62  A6  DC  9B  F0  4E  --  043680
46  89  FC  46  8B  D0  46  89  CE  46  8B  00  A6  E9  EE  D9  --  043690
52  9E  DD  9B  2E  58  06  DF  2E  9B  00  00  CC  46  C7  CE  --  0436A0
FF  5A  9E  DD  9B  D4  4E  D8  9B  2E  58  06  DF  2E  9B  FF  --  0436B0
9B  FF  62  9E  DD  9B  EC  4E  D8  9B  2E  5A  06  DF  2E  9B  --  0436C0
DC  9B  FF  62  A6  DC  9B  F4  4E  D8  9B  2E  5C  06  DF  2E  --  0436D0
9B  E8  D9  9B  E4  5E  D9  9B  FF  52  86  DC  9B  FF  5A  86  --  0436E0
DD  9B  D4  4E  D8  9B  2E  62  06  DF  2E  9B  FF  52  9E  DD  --  0436F0
9E  DD  9B  EC  4E  D8  9B  2E  5A  06  DF  2E  9B  FF  5A  9E  --  043700
62  86  DC  9B  F4  4E  D8  9B  2E  66  06  DF  2E  9B  FF  62  --  043710
9B  E0  5E  D9  9B  FF  52  A6  DC  9B  FF  5A  A6  DC  9B  FF  --  043720
8B  D8  5E  D9  9B  F4  46  D9  9B  DC  5E  D9  9B  D4  46  D9  --  043730
50  D0  46  2B  CE  46  8B  CA  46  89  40  CC  46  2B  CE  46  --  043740
DD  2E  9B  FF  62  9E  DD  9B  02  C4  83  00  5C  ED  A7  9A  --  043750
9A  46  D9  9B  8E  5E  D9  9B  FF  62  B6  DC  9B  2D  C8  06  --  043760
E4  46  D9  9B  8A  5E  D9  9B  FA  46  DE  9B  D8  4E  D8  9B  --  043770
DC  46  D8  9B  8E  4E  D8  9B  E0  46  D8  9B  8E  4E  D8  9B  --  043780
D8  9B  2E  5C  06  DF  2E  9B  86  5E  D9  9B  8E  4E  D8  9B  --  043790
9B  8E  46  D9  9B  FF  7A  9E  D9  9B  8E  4E  D8  9B  E4  4E  --  0437A0
D8  9B  2E  58  06  DF  2E  9B  FF  76  9E  D9  9B  8E  4E  D8  --  0437B0
62  86  DC  9B  FF  7A  86  D9  9B  FF  62  9E  DD  9B  E0  4E  --  0437C0
9B  FF  7A  86  D9  9B  82  5E  D9  9B  FF  76  8E  D8  9B  FF  --  0437D0
4E  D8  9B  AE  46  D9  9B  FF  7E  9E  D9  9B  FF  76  8E  D8  --  0437E0
B2  46  D9  9B  FF  62  9E  DD  9B  2D  A0  06  DC  2E  9B  8A  --  0437F0
ED  94  9A  2E  28  1E  DC  2E  9B  FF  62  8E  DC  9B  01  FE  --  043800
06  DC  2E  9B  8A  4E  D8  9B  AE  46  D9  9B  24  72  00  5C  --  043810
FF  5A  8E  DC  9B  B2  46  D9  9B  FF  5A  9E  DD  9B  2D  A0  --  043820
```

```
8A 4E D8 9B AE 46 D9 9B 22 EB 2D A0 06 DC 2E 9B -- 043830
9B B2 46 D9 9B FF 52 9E DD 9B 2D A0 06 DC 2E 9B -- 043840
9A 00 5C ED 99 9A 2D A0 26 DC 2E 9B FF 52 8E DC -- 043850
46 D9 9B C4 56 89 C2 46 89 08 C4 83 00 5C EE 2F -- 043860
00 5C ED 94 9A 2E 28 1E DC 2E 9B 86 4E D8 9B 92 -- 043870
2D A0 06 DC 2E 9B 86 4E D8 9B 92 46 D9 9B 10 72 -- 043880
2D A0 26 DC 2E 9B 86 4E D8 9B 92 46 D9 9B 0E EB -- 043890
BE 46 89 08 C4 83 00 5C EE 2F 9A 00 5C ED 99 9A -- 0438A0
28 1E DC 2E 9B 82 4E D8 9B 92 46 D9 9B C0 56 89 -- 0438B0
82 4E D8 9B 92 46 D9 9B 10 72 00 5C ED 94 9A 2E -- 0438C0
82 4E D8 9B 92 46 D9 9B 0E EB 2D A0 06 DC 2E 9B -- 0438D0
00 5C EE 2F 9A 00 5C ED 99 9A 2D A0 26 DC 2E 9B -- 0438E0
8E D8 9B 92 46 D9 9B BC 56 89 BA 46 89 08 C4 83 -- 0438F0
9B 11 72 00 5C ED 94 9A 2E 28 1E DC 2E 9B FF 7E -- 043900
0F EB 2D A0 06 DC 2E 9B FF 7E 8E D8 9B 92 46 D9 -- 043910
9A 2D A0 26 DC 2E 9B FF 7E 8E D8 9B 92 46 D9 9B -- 043920
89 B6 46 89 08 C4 83 00 5C EE 2F 9A 00 5C ED 99 -- 043930
46 C7 1E 7E 00 D0 7E 83 24 75 00 C8 7E 83 B8 56 -- 043940
46 83 A6 7E C5 11 7D D0 46 3B D2 46 8B 00 00 D2 -- 043950
89 D0 46 8B E7 EB D2 46 FF 05 89 A2 46 8B 02 A6 -- 043960
A4 46 89 C4 46 8B 73 7D CA 46 3B D2 46 8B D2 46 -- 043970
46 3B A4 46 8B A4 46 89 9E 46 8B 06 7D 9E 46 3B -- 043980
46 8B A4 46 89 A0 46 8B 00 01 C6 46 C7 0B 7E A0 -- 043990
E9 00 03 B8 06 75 00 C6 7E 83 0C 7D A2 46 3B A4 -- 0439A0
8B 02 A6 46 83 A6 7E C5 A2 46 89 A4 46 8B 00 A0 -- 0439B0
C4 56 11 C2 46 01 C0 56 8B BE 46 8B 05 89 A4 46 -- 0439C0
8B B6 46 8B C0 56 11 BE 46 01 BC 56 8B BA 46 8B -- 0439D0
C8 7E 83 85 EB D2 46 FF BC 56 11 BA 46 01 B8 56 -- 0439E0
46 89 40 CE 46 8B 1F 7D 00 FF CE 7E 81 26 75 01 -- 0439F0
A6 46 83 A6 7E C5 11 7D 01 00 D2 7E 81 D2 01 FE -- 043A00
B3 E9 C8 46 FF E8 EB D2 46 FF 05 89 A0 46 8B 02 -- 043A10
EC 46 D9 9B 28 EB C0 2B 00 01 05 C7 10 7E C5 FB -- 043A20
46 D9 9B 14 77 00 5C ED 94 9A 2D C8 1E DC 2E 9B -- 043A30
F5 E9 03 72 00 5C ED 94 9A 2D A0 1E DC 2E 9B EC -- 043A40
C7 00 00 2E C8 57 56 CB 5E 5F C9 9B 00 02 B8 FA -- 043A50
F2 46 8B 03 03 E9 03 7E 04 F2 7E 83 00 00 F2 46 -- 043A60
45 A7 FF 2E D8 8B E0 D1 00 83 E9 03 76 00 04 3D -- 043A70
2D 84 3E C5 2E 2A 9F 2A 8C 2A 79 2A 66 2A 4F 2A -- 043A80
2D 8C 3E C5 2E FE 56 89 FC 46 89 02 55 8B 05 8B -- 043A90
C5 2E F4 5E D9 9B 05 D9 9B 2D A8 3E C5 2E 4E EB -- 043AA0
5E D9 9B 05 D9 9B 2D 9C 3E C5 2E 3B EB 2D 6C 3E -- 043AB0
05 D9 9B 2D B4 3E C5 2E 28 EB 2D 5C 3E C5 2E F4 -- 043AC0
2D 74 3E C5 2E 15 EB 2D 64 3E C5 2E F4 5E D9 9B -- 043AD0
2D 7C 3E C5 2E FE 56 89 FC 46 89 02 55 8B 05 8B -- 043AE0
7D 01 F2 7E 83 FA 56 89 F8 46 89 02 55 8B 05 8B -- 043AF0
36 C4 2E 01 71 E9 03 7E 03 F2 7E 83 01 7A E9 03 -- 043B00
9B 02 5C 8E 26 3C 03 26 02 E7 C1 0A 7E 8B 2D 74 -- 043B10
E7 C1 0A 7E 8B 2D 84 36 C4 2E DA 5E D9 9B 05 D9 -- 043B20
9B DA 66 D8 9B 05 D9 9B 02 5C 8E 26 3C 03 26 02 -- 043B30
2E EA 5E DD 9B E2 4E DC 9B F4 46 D9 9B E2 5E DD -- 043B40
5C 8E 26 3C 03 26 02 E7 C1 0A 7E 8B 2D 74 36 C4 -- 043B50
7E 03 02 E7 C1 F2 7E 8B EA 46 DC 9B 05 D9 9B 02 -- 043B60
C1 0A 7E 8B 2D 7C 36 C4 2E 1D D9 9B 12 5E 8E 10 -- 043B70
DA 5E D9 9B 05 D9 9B 02 5C 8E 26 3C 03 26 02 E7 -- 043B80
8E 26 3C 03 26 02 E7 C1 0A 7E 8B 2D 8C 36 C4 2E -- 043B90
0A 7E 8B E2 5E DD 9B DA 66 D8 9B 05 D9 9B 02 5C -- 043BA0
E2 4E DC 9B 05 D9 9B FA 5E 8E F8 7E 03 02 E7 C1 -- 043BB0
26 02 E7 C1 0A 7E 8B 2D 7C 36 C4 2E EA 5E DD 9B -- 043BC0
F2 7E 8B EA 46 DC 9B 05 D9 9B 02 5C 8E 26 3C 03 -- 043BD0
```

```
C1 0A 7E 8B 1D D9 9B 16 5E 8E 14 7E 03 02 E7 C1 -- 043BE0
D2 5E D9 9B 05 D9 9B 02 5C 8E 26 3C 03 26 02 E7 -- 043BF0
3C 03 26 02 E7 C1 0A 7E 8B 2D 8C 36 C4 2E 01 FE -- 043C00
9B DA 5E DD 9B D2 66 D8 9B 05 D9 9B 02 5C 8E 26 -- 043C10
2D 7C 36 C4 2E E2 5E DD 9B DA 4E DC 9B F4 46 D9 -- 043C20
05 D9 9B 02 5C 8E 26 3C 03 26 02 E7 C1 0A 7E 8B -- 043C30
7E 03 02 E7 C1 F2 7E 8B EA 5E DD 9B E2 46 DC 9B -- 043C40
D9 9B EA 66 DC 9B 2E 68 06 DF 2E 9B 1A 5E 8E 18 -- 043C50
4E DC 9B 05 D9 9B 18 7E 03 02 E7 C1 F2 7E 8B 1D -- 043C60
65 EB 18 7E 03 02 E7 C1 F2 7E 8B EA 5E DD 9B 34 -- 043C70
8B 05 D9 9B FE 5E 8E FC 7E 03 02 E7 C1 0A 7E 8B -- 043C80
7E 8B 1D D9 9B 12 5E 8E 10 7E 03 02 E7 C1 F2 7E -- 043C90
F2 7E 8B 05 D9 9B FA 5E 8E F8 7E 03 02 E7 C1 0A -- 043CA0
C1 0A 7E 8B 1D D9 9B 16 5E 8E 14 7E 03 02 E7 C1 -- 043CB0
D8 9B 2E 68 06 DF 2E 9B FA 5E 8E F8 7E 03 02 E7 -- 043CC0
03 02 E7 C1 F2 7E 8B EA 5E DD 9B 34 4E DC 9B 25 -- 043CD0
1D D9 9B EA 66 DC 9B 24 46 DD 9B 1A 5E 8E 18 7E -- 043CE0
8B 05 D9 9B 16 5E 8E 14 7E 03 02 E7 C1 F2 7E 8B -- 043CF0
7E 8B 1D D9 9B 0E 5E 8E 0C 7E 03 02 E7 C1 F2 7E -- 043D00
02 E6 C1 F2 76 8B 12 5E 8E 10 7E 03 02 E7 C1 F2 -- 043D10
24 D8 26 9B 2E 68 06 DF 2E 9B 12 46 8E 10 76 03 -- 043D20
E7 C1 F2 7E 8B 1D D9 9B 1C 46 DC 9B 2C 4E DC 9B -- 043D30
25 D8 9B 2E 68 06 DF 2E 9B 16 5E 8E 14 7E 03 02 -- 043D40
7E 03 02 E7 C1 F2 7E 8B EA 5E DD 9B 34 4E DC 9B -- 043D50
E9 F2 46 FF 1D D9 9B EA 66 DC 9B 24 46 DD 9B 14 -- 043D60
3C 03 26 02 E7 C1 0A 7E 8B 2D 94 36 C4 2E FC F4 -- 043D70
C0 2B 14 5D D9 9B 0C 7E C5 05 D9 9B 02 5C 8E 26 -- 043D80
19 C4 00 6C 1A 44 00 6C 1B 1C 00 CB 5E 5F C9 9B -- 043D90
19 D4 00 6C 1A 4C 00 6C 19 E4 00 6C 1A 48 00 6C -- 043DA0
1A 04 00 6C 1A 54 00 6C 19 F4 00 6C 1A 50 00 6C -- 043DB0
1A 24 00 6C 1A 5C 00 6C 1A 14 00 6C 1A 58 00 6C -- 043DC0
00 00 00 6C 19 B8 00 6C 1A 34 00 6C 1A 60 00 6C -- 043DD0
00 00 00 00 00 00 00 6C 19 BC 3F E0 00 00 00 00 -- 043DE0
1A 64 3F D0 00 00 00 00 00 00 6C 19 C0 3F E8 -- 043DF0
3F F0 00 00 00 00 00 00 6C 19 AC 00 6C 01 FE -- 043E00
3F E3 33 33 33 33 33 33 3F D9 99 99 99 99 99 9A -- 043E10
3F D6 66 66 66 66 66 66 3F C3 33 33 33 33 33 33 -- 043E20
3F EB 33 33 33 33 33 33 3F E4 CC CC CC CC CC CD -- 043E30
00 6C 1B 1A 00 6C 1B 04 00 6C 1A F4 00 6C 1A AC -- 043E40
00 24 77 0E 00 6C 1B 18 40 6F E0 00 00 00 00 00 -- 043E50
00 00 00 00 00 00 00 00 00 6C 19 B0 00 6C 1B 1E -- 043E60
00 00 00 00 40 50 00 00 00 00 00 00 00 6C 19 A8 -- 043E70
40 F0 00 00 00 00 00 00 6C 1B 14 40 68 00 00 -- 043E80
FF F0 00 06 00 08 00 02 41 50 00 00 00 00 00 00 -- 043E90
2E EC 8B 55 57 56 00 FF FF F9 00 04 00 03 00 0B -- 043EA0
00 00 02 C8 57 56 CB 5E 5F C9 05 8B 5B C6 3E C5 -- 043EB0
02 68 03 6A 35 FF 5B CA 3E C5 2E 50 FE 46 8D 16 -- 043EC0
55 57 56 CB 5E 5F C9 0A C4 83 00 64 40 D0 9A 02 -- 043ED0
34 4A 2B 9A 00 54 C3 E8 9A 00 34 3A 98 9A EC 8B -- 043EE0
05 74 00 3D 83 5B C6 3E C5 2E 00 1C 19 54 9A 00 -- 043EF0
84 9A EC 8B 55 57 56 CB 5E 5F C9 00 34 2F B0 9A -- 043F00
CE 3E C5 2E 00 01 05 C7 5B C6 3E C5 2E 00 1C 08 -- 043F10
00 64 4E 56 9A 1F 40 68 2A 75 05 0B 02 45 8B 5B -- 043F20
1F 40 68 02 55 89 05 89 5B CE 3E C5 2E 02 C4 83 -- 043F30
89 05 89 5B D2 3E C5 2E 02 C4 83 00 64 4E 56 9A -- 043F40
DA 36 C4 2E 5D 74 00 3D 83 5B D6 3E C5 2E 02 55 -- 043F50
C4 2E 00 05 C6 02 5C 8E 26 3C 03 26 4F 3D 8B 5B -- 043F60
03 26 02 E7 C1 4F 3D 8B 5B D6 3E C5 2E 5B E2 36 -- 043F70
```

```
36 C4 2E 00 5C ED 99 9A 05 D9 9B 02 5C 8E 26 3C  --  043F80
3C 03 26 02 E7 C1 4F 3D 8B 5B D6 3E C5 2E 5B DE  --  043F90
34 50 B4 9A 00 5C ED 99 9A 05 D9 9B 02 5C 8E 26  --  043FA0
0E 9A 00 5C 18 05 9A 00 34 2F 8A 9A 10 C4 83 00  --  043FB0
2E EC 8B 55 57 56 CB 5E 5F C9 9B C0 2B 00 5C 1A  --  043FC0
19 2A 9A 00 01 05 C7 13 75 00 3D 83 5B E6 3E C5  --  043FD0
CB 5E 5F C9 00 5C 17 88 9A 00 5C 19 6F 9A 00 5C  --  043FE0
8B 5B CE 3E C5 2E 00 5C 1D 1E 9A EC 8B 55 57 56  --  043FF0
4E E3 9A 35 FF 02 75 FF 2D 74 05 0B 02 45 01 FE  --  044000
9A 35 FF 02 75 FF 5B D2 3E C5 2E 04 C4 83 00 64  --  044010
00 00 05 C7 5B CE 3E C5 2E 04 C4 83 00 64 4E E3  --  044020
28 9A 00 00 05 C7 5B C6 3E C5 2E 00 00 02 45 C7  --  044030
36 C4 2E 17 74 00 3D 83 5B EA 3E C5 2E 00 34 30  --  044040
C7 02 5C 8E 26 3C 03 26 02 E7 C1 4F 3D 8B 5B EE  --  044050
2E EC 8B 55 57 56 CB 5E 5F C9 C0 2B 00 00 02 45  --  044060
17 DD 9A 00 00 05 C7 13 74 00 3D 83 5B E6 3E C5  --  044070
CB 5E 5F C9 00 5C 19 50 9A 00 34 5B 2F 9A 00 5C  --  044080
00 00 A4 46 C7 00 00 A6 46 C7 00 00 9C C8 57 56  --  044090
8B 5B D6 3E C5 2E 5B DE 36 C4 2E 00 34 53 AE 9A  --  0440A0
9B 0A 46 DD 9B 02 5C 8E 26 3C 03 26 02 E7 C1 3D  --  0440B0
E7 C1 3D 8B 5B D6 3E C5 2E 5B E2 36 C4 2E 1D D9  --  0440C0
2E 1D D9 9B 12 46 DD 9B 02 5C 8E 26 3C 03 26 02  --  0440D0
00 3D 83 5B D6 3E C5 2E 00 00 05 C7 5B F2 3E C5  --  0440E0
DE 3E C5 2E 35 FF 02 75 FF 5B E2 3E C5 2E 2D 7E  --  0440F0
51 0B 9A 35 FF 5B D6 3E C5 2E 35 FF 02 75 FF 5B  --  044100
2E 09 B6 E9 03 74 C0 0B B8 46 89 0A C4 83 00 34  --  044110
C0 2B 02 EB 00 01 B8 05 75 00 3D 83 5B D6 3E C5  --  044120
74 00 3D 83 5B F6 3E C5 2E 34 74 C0 0B BA 46 89  --  044130
1F 40 68 15 75 05 0B 02 45 8B 5B EE 3E C5 2E 2A  --  044140
89 05 89 5B EE 3E C5 2E 02 C4 83 00 64 4E 56 9A  --  044150
74 00 BA 7E 83 00 00 05 C7 5B EA 3E C5 2E 02 55  --  044160
83 5B C6 3E C5 2E 00 00 05 C7 5B FA 3E C5 2E 09  --  044170
DA 36 C4 2E 00 00 AA 46 C7 00 F8 E9 03 75 00 3D  --  044180
C6 02 5C 8E 26 3C 03 26 3D 8B 5B D6 3E C5 2E 5B  --  044190
00 01 A6 46 C7 01 D9 E9 03 75 00 BA 7E 83 00 05  --  0441A0
ED 99 9A 0A 46 DD 9B 00 5C ED 99 9A 12 46 DD 9B  --  0441B0
E2 3E C5 2E 01 6A 10 C4 83 00 34 50 B4 9A 00 5C  --  0441C0
35 FF 02 75 FF 5B DE 3E C5 2E 35 FF 02 75 FF 5B  --  0441D0
83 05 FF 5B D6 3E C5 2E 0A C4 83 00 1C 01 97 9A  --  0441E0
C5 2E 08 D4 E9 03 75 00 A4 7E 83 17 75 00 A6 7E  --  0441F0
7E 83 08 C9 E9 C0 2B 00 00 05 C7 5B EA 3E 01 FE  --  044200
22 75 00 01 3D 05 8B 5B D6 3E C5 2E 2E 74 00 A4  --  044210
EE 3E C5 2E 00 02 02 45 C7 3D C5 5B EE 3E C5 2E  --  044220
00 01 05 C7 5B EA 3E C5 2E 00 00 05 C7 3D C5 5B  --  044230
E7 C1 3D 8B 5B EA 3E C5 2E 5B EE 36 C4 2E C7 EB  --  044240
3E C5 2E 00 02 02 45 C7 02 5C 8E 26 3C 03 26 02  --  044250
26 02 E7 C1 3D 8B 5B EA 3E C5 2E 48 05 8B 5B D6  --  044260
EB 05 FF 5B EA 3E C5 2E 05 89 02 5C 8E 26 3C 03  --  044270
DD 9A BA 76 FF 0E 74 00 3D 83 5C 06 3E C5 2E 88  --  044280
3D 83 5B F6 3E C5 2E 00 DC E9 02 C4 83 00 1C 19  --  044290
2E 5B EE 36 C4 2E 05 8B 5C 0A 3E C5 2E 50 74 00  --  0442A0
02 5C 8E 26 3C 03 26 02 E7 C1 3D 8B 5B EA 3E C5  --  0442B0
8B 5B EA 3E C5 2E 05 8B 5B D6 3E C5 2E 02 45 89  --  0442C0
3E C5 2E 05 89 02 5C 8E 26 3C 03 26 02 E7 C1 3D  --  0442D0
C7 5B CA 3E C5 2E 09 74 00 BA 7E 83 05 FF 5B EA  --  0442E0
C5 2E 1D 75 00 BA 7E 83 00 34 43 02 9A 00 02 05  --  0442F0
9A 05 FF 5B D6 3E C5 2E 13 74 00 3D 83 5C 0A 3E  --  044300
5C 0A 3E C5 2E 0D FF 5B D6 3E C5 2E 00 34 43 8A  --  044310

03 26 3D 8B 5B D6 3E C5 2E 5B DA 36 C4 2E 05 8B  --  044320
```

306

```
2E 5B E2 36 C4 2E BA 76 FF 05 88 02 5C 8E 26 3C -- 044330
04 03 26 02 EO C1 48 05 03 BA 46 8B 5B D6 3E C5 -- 044340
05 03 BA 46 8B 5B DE 36 C4 2E 50 52 02 54 8B 26 -- 044350
01 97 9A 50 52 02 54 8B 26 04 03 26 02 EO C1 48 -- 044360
F2 3E C5 2E 05 FF 5B D6 3E C5 2E 0A C4 83 00 1C -- 044370
5B D6 3E C5 2E 5B DE 36 C4 2E 07 51 E9 05 8B 5B -- 044380
05 D9 9B 02 5C 8E 26 3C 03 26 02 E7 C1 4F 3D 8B -- 044390
3D 8B 5B D6 3E C5 2E 5B E2 36 C4 2E FO 5E D9 9B -- 0443A0
D9 9B 05 D9 9B 02 5C 8E 26 3C 03 26 02 E7 C1 4F -- 0443B0
D9 9B 12 46 DD 9B F8 5E D9 9B 0A 46 DD 9B F4 5E -- 0443C0
EA 3E C5 2E 5B EE 36 C4 2E 00 00 B4 46 C7 FC 5E -- 0443D0
45 8B 02 5C 8E 26 3C 03 26 02 E7 C1 4F 3D 8B 5B -- 0443E0
00 03 3D 05 8B 5B D6 3E C5 2E 4C 75 00 02 3D 02 -- 0443F0
2F 7E 00 01 3D 05 8B 5B EA 3E C5 2E 40 7C 01 FE -- 044400
05 8B 02 5C 8E 26 3C 03 26 02 E7 C1 4F 4F 3D 8B -- 044410
03 26 02 E7 C1 4F 3D 8B 5B EA 3E C5 2E A2 46 89 -- 044420
C7 05 7C 00 03 3D A2 46 2B 05 8B 02 5C 8E 26 3C -- 044430
05 75 00 01 3D 05 8B 5B D6 3E C5 2E 00 03 B4 46 -- 044440
D9 9B 7D 74 CO OB A8 46 89 CO 2B 02 EB 00 01 B8 -- 044450
D8 9B F4 46 D9 9B 8C 5E DD 9B FC 66 D8 9B F4 46 -- 044460
D8 9B FO 46 D9 9B 94 5E DD 9B 8C 4E DC 9B FC 66 -- 044470
DC 9B F8 66 D8 9B FO 46 D9 9B 9C 5E DD 9B F8 66 -- 044480
00 64 4E FE 9A 00 5C ED 99 9A 94 46 DC 9B 9C 4E -- 044490
00 5C ED 99 9A BC 46 D9 9B BC 5E D9 9B 08 C4 83 -- 0444A0
9A 50 FO 46 8D 16 50 F8 46 8D 16 50 EO 46 8D 16 -- 0444B0
8D 16 50 EO 46 8D 16 08 6A 14 C4 83 00 34 57 F9 -- 0444C0
75 00 B4 7E 83 0A C4 83 00 5C ED 6E 9A 50 FO 46 -- 0444D0
50 CO 46 8D 16 3E 74 00 3D 83 5B EA 3E C5 2E 48 -- 0444E0
9A 50 FO 46 8D 16 50 F8 46 8D 16 50 CC 46 8D 16 -- 0444F0
89 DC 46 89 5A 16 CC 46 8D 10 C4 83 00 34 54 EC -- 044500
AA 46 C7 DA 56 89 D8 46 89 5A 16 CO 46 8D DE 56 -- 044510
C5 2E 5B DE 36 C4 2E 39 EB 00 03 B4 46 C7 00 01 -- 044520
8B 26 04 03 26 02 EO C1 00 03 2D 05 8B 5B D6 3E -- 044530
2D 05 8B 5B E2 36 C4 2E DE 56 89 DC 46 89 02 54 -- 044540
89 D8 46 89 02 54 8B 26 04 03 26 02 EO C1 00 03 -- 044550
FC 66 D8 9B F4 46 D9 9B 7D 74 00 1A 7E 83 DA 56 -- 044560
8C 4E DC 9B FC 66 D8 9B F4 46 D9 9B 8C 5E DD 9B -- 044570
9C 5E DD 9B F8 66 D8 9B FO 46 D9 9B 94 5E DD 9B -- 044580
94 46 DC 9B 9C 4E DC 9B F8 66 D8 9B FO 46 D9 9B -- 044590
5E D9 9B 08 C4 83 00 64 4E FE 9A 00 5C ED 99 9A -- 0445A0
16 50 E8 46 8D 16 00 5C ED 99 9A BC 46 D9 9B BC -- 0445B0
C4 83 00 34 58 26 9A 50 FO 46 8D 16 50 F8 46 8D -- 0445C0
ED 6E 9A 50 F8 46 8D 16 50 E8 46 8D 16 08 6A 14 -- 0445D0
DE 76 FF D8 76 FF DA 76 FF 00 6A 0A C4 83 00 5C -- 0445E0
35 FF 02 75 FF 5B D2 3E C5 2E B4 76 FF DC 76 FF -- 0445F0
B6 46 8D 16 35 FF 02 75 FF 5B CE 3E C5 2E 01 FE -- 044600
00 5C 19 9C 9A 50 FO 46 8D 16 50 F8 46 8D 16 50 -- 044610
CO OB 02 C4 83 00 54 D2 88 9A B6 76 FF 20 C4 83 -- 044620
5B CE 36 C4 2E 32 74 00 1A 7E 83 FB D8 E9 03 75 -- 044630
46 DD 9B 02 5C 8E 26 3C 03 26 02 E7 C1 B6 7E 8B -- 044640
26 02 E7 C1 B6 7E 8B 5B D2 36 C4 2E 1D D9 9B 0A -- 044650
A8 7E 83 00 84 E9 12 46 DD 9B 02 5C 8E 26 3C 03 -- 044660
B2 7E 83 B2 46 89 48 B6 46 8B 00 81 E9 03 75 00 -- 044670
03 26 02 E7 C1 B2 7E 8B 5B CE 36 C4 2E 49 7C 00 -- 044680
26 02 E7 C1 47 B2 7E 8B 05 D9 9B 02 5C 8E 26 3C -- 044690
02 E7 C1 B2 7E 8B 5B D2 36 C4 2E 1D D9 9B 3C 03 -- 0446A0
E7 C1 47 B2 7E 8B 05 D9 9B 02 5C 8E 26 3C 03 26 -- 0446B0

DE 3E C5 2E B1 EB B2 4E FF 1D D9 9B 3C 03 26 02 -- 0446C0
1D D9 9B 3D C5 5B CE 3E C5 2E 05 D9 9B 3D C5 5B -- 0446D0
```

307

```
C5 5B D2 3E C5 2E 05 D9 9B 3D C5 5B E2 3E C5 2E -- 0446E0
03 D8 E9 03 7F 00 B6 7E 83 B6 46 FF 1D D9 9B 3D -- 0446F0
7E 00 02 3D 05 8B 5B D6 3E C5 2E 00 00 B0 46 C7 -- 044700
B2 46 C7 3C 75 00 AA 7E 83 42 74 00 B4 7E 83 48 -- 044710
B2 46 FF 00 34 4A 88 9A 0A 7D 03 B2 7E 83 00 00 -- 044720
2E 03 2D 83 5B D6 3E C5 2E 00 01 B0 46 C7 F0 EB -- 044730
26 02 E7 C1 4F 3D 8B 5B EA 3E C5 2E 5B EE 36 C4 -- 044740
3D 83 5B D6 3E C5 2E 03 2D 83 02 5C 8E 26 3C 03 -- 044750
BA 46 89 A4 46 89 C0 2B 02 EB 00 01 B8 05 75 00 -- 044760
00 02 02 45 C7 3D C5 5B EE 3E C5 2E 23 74 C0 0B -- 044770
C5 2E 05 89 B0 46 89 C0 2B 3D C5 5B EE 3E C5 2E -- 044780
55 8B 05 8B 5B CE 3E C5 2E 00 01 05 C7 5B EA 3E -- 044790
55 8B 05 8B 5B D2 3E C5 2E DE 56 89 DC 46 89 02 -- 0447A0
00 B2 46 C7 00 00 AE 46 C7 DA 56 89 D8 46 89 02 -- 0447B0
00 BA 7E 83 02 A3 E9 03 7C B6 46 3B B2 46 8B 00 -- 0447C0
9B DC 7E C5 94 5E DD 9B EE D9 9B 01 51 E9 03 74 -- 0447D0
5B D6 3E C5 2E 5B DE 36 C4 2E 9C 5E D9 9B 05 D9 -- 0447E0
05 D9 9B 02 5C 8E 26 3C 03 26 02 E7 C1 4F 3D 8B -- 0447F0
76 00 5C ED 94 9A 94 5E DC 9B 9C 66 D8 9B 01 FE -- 044800
5B DE 36 C4 2E 8C 5E D9 9B 05 D9 9B DC 7E C5 2A -- 044810
8E 26 3C 03 26 02 E7 C1 4F 3D 8B 5B D6 3E C5 2E -- 044820
D9 9B DC 7E C5 2B EB 8C 66 D8 9B 05 D9 9B 02 5C -- 044830
8B 5B D6 3E C5 2E 5B DE 36 C4 2E 84 5E D9 9B 05 -- 044840
9B 05 D9 9B 02 5C 8E 26 3C 03 26 02 E7 C1 4F 3D -- 044850
5C ED 94 9A 5B FE 1E DC 2E 9B E0 D9 9B 84 66 D8 -- 044860
7E C5 FF 74 9E DD 9B EE D9 9B 00 B2 E9 03 72 00 -- 044870
C5 2E 5B E2 36 C4 2E FF 7C 9E D9 9B 05 D9 9B D8 -- 044880
02 5C 8E 26 3C 03 26 02 E7 C1 4F 3D 8B 5B D6 3E -- 044890
ED 94 9A FF 74 9E DC 9B FF 7C A6 D8 9B 05 D9 9B -- 0448A0
2E FF 6C 9E D9 9B 05 D9 9B D8 7E C5 2C 76 00 5C -- 0448B0
26 02 E7 C1 4F 3D 8B 5B D6 3E C5 2E 5B E2 36 C4 -- 0448C0
2D EB FF 6C A6 D8 9B 05 D9 9B 02 5C 8E 26 3C 03 -- 0448D0
5B E2 36 C4 2E FF 64 9E D9 9B 05 D9 9B D8 7E C5 -- 0448E0
8E 26 3C 03 26 02 E7 C1 4F 3D 8B 5B D6 3E C5 2E -- 0448F0
DC 2E 9B E0 D9 9B FF 64 A6 D8 9B 05 D9 9B 02 5C -- 044900
DC 46 83 B2 46 FF 0E 73 00 5C ED 94 9A 5B FE 1E -- 044910
3E C5 2E 5B DA 36 C4 2E FE 9B E9 04 D8 46 83 04 -- 044920
7E C5 00 05 C6 02 5C 8E 26 3C 03 26 3D 8B 5B D6 -- 044930
3D 8B 5B D6 3E C5 2E 5B DE 36 C4 2E 05 D9 9B DC -- 044940
D8 7E C5 1D D9 9B 02 5C 8E 26 3C 03 26 02 E7 C1 -- 044950
C1 3D 8B 5B D6 3E C5 2E 5B E2 36 C4 2E 05 D9 9B -- 044960
2E BA 76 FF 1D D9 9B 02 5C 8E 26 3C 03 26 02 E7 -- 044970
04 03 26 02 E0 C1 48 05 03 BA 46 8B 5B D6 3E C5 -- 044980
05 03 BA 46 8B 5B DE 36 C4 2E 50 52 02 54 8B 26 -- 044990
01 97 9A 50 52 02 54 8B 26 04 03 26 02 E0 C1 48 -- 0449A0
C7 AE 46 FF 05 FF 5B D6 3E C5 2E 0A C4 83 00 1C -- 0449B0
7E 83 12 74 00 3D 83 5B F2 3E C5 2E 00 01 A6 46 -- 0449C0
05 89 5B F2 3E C5 2E 00 34 50 F2 9A 0C 74 00 1A -- 0449D0
2A 74 00 B0 7E 83 6E 74 00 3D 83 5B F2 3E C5 2E -- 0449E0
46 89 AC 46 8B 03 EB 00 03 B8 05 7C 03 AE 7E 83 -- 0449F0
4F 3D 8B 5B EA 3E C5 2E 5B EE 36 C4 2E AC 01 FE -- 044A00
EE 36 C4 2E 05 01 02 5C 8E 26 3C 03 26 02 E7 C1 -- 044A10
8E 26 3C 03 26 02 E7 C1 3D 8B 5B EA 3E C5 2E 5B -- 044A20
2E 48 05 8B 5B D6 3E C5 2E 00 02 02 45 C7 02 5C -- 044A30
02 5C 8E 26 3C 03 26 02 E7 C1 3D 8B 5B EA 3E C5 -- 044A40
8B 00 00 BA 46 C7 F9 28 E9 5B EA 3E C5 2E 05 89 -- 044A50

00 34 53 AE 9A FE B1 E9 03 7F B2 46 3B 48 B6 46 -- 044A60
C5 2E 5B EE 36 C4 2E 1A 74 00 B0 7E 83 FE A9 E9 -- 044A70
02 5C 8E 26 3C 03 26 02 E7 C1 4F 3D 8B 5B EA 3E -- 044A80
```

308

```
4F 3D 8B 5B D6 3E C5 2E 5B E2 36 C4 2E 03 05 83 -- 044A90
ED 99 9A 05 D9 9B 02 5C 8E 26 3C 03 26 02 E7 C1 -- 044AA0
C1 4F 3D 8B 5B D6 3E C5 2E 5B DE 36 C4 2E 00 5C -- 044AB0
5C ED 99 9A 05 D9 9B 02 5C 8E 26 3C 03 26 02 E7 -- 044AC0
9B 00 3E B8 F7 1D E9 10 C4 83 00 34 50 B4 9A 00 -- 044AD0
C5 2E 00 34 4A 2B 9A EC 8B 55 57 56 CB 5E 5F C9 -- 044AE0
9A 35 FF 02 75 FF 1B 74 05 0B 02 45 8B 5B EE 3E -- 044AF0
00 00 05 C7 5B EE 3E C5 2E 04 C4 83 00 64 4E E3 -- 044B00
74 05 0B 02 45 8B 5B DE 3E C5 2E 00 00 02 45 C7 -- 044B10
C5 2E 04 C4 83 00 64 4E E3 9A 35 FF 02 75 FF 3F -- 044B20
E2 3E C5 2E 00 00 02 45 C7 00 00 05 C7 5B DE 3E -- 044B30
C5 2E 04 C4 83 00 64 4E E3 9A 35 FF 02 75 FF 5B -- 044B40
04 C4 83 00 64 4E E3 9A 35 FF 02 75 FF 5B DA 3E -- 044B50
05 89 5B D6 3E C5 2E 05 89 5C 0E 3E C5 2E C0 2B -- 044B60
00 60 C8 57 56 CB 5E 5F C9 05 89 5B EA 3E C5 2E -- 044B70
00 0A B8 06 7D 00 03 3D 05 8B 5B D6 3E C5 2E 00 -- 044B80
06 3E C5 2E 00 00 05 C7 5B F2 3E C5 2E 07 A4 E9 -- 044B90
3D C5 5B DE 3E C5 2E 00 9A E9 03 75 00 3D 83 5C -- 044BA0
C1 3D 8B 5B D6 3E C5 2E 5B DE 36 C4 2E 05 D9 9B -- 044BB0
E2 3E C5 2E 1D D9 9B 02 5C 8E 26 3C 03 26 02 E7 -- 044BC0
5B D6 3E C5 2E 5B E2 36 C4 2E 05 D9 9B 3D C5 5B -- 044BD0
6A 1D D9 9B 02 5C 8E 26 3C 03 26 02 E7 C1 3D 8B -- 044BE0
05 FF 5B D6 3E C5 2E 02 C4 83 00 1C 19 DD 9A 02 -- 044BF0
F2 3E C5 2E 02 C4 83 00 34 5A 79 9A 01 6A 01 FE -- 044C00
5B D6 3E C5 2E 07 17 E9 03 74 00 3D 83 05 89 5B -- 044C10
54 BE 92 9A 35 FF 02 75 FF 5B DA 3E C5 2E 35 FF -- 044C20
5B D6 3E C5 2E 06 F7 E9 03 74 C0 0B 06 C4 83 00 -- 044C30
C5 2E 00 01 05 C7 5C 12 3E C5 2E 06 ED E9 0D FF -- 044C40
C6 3E C5 2E 05 89 5C 16 3E C5 2E 05 8B 5C 1A 3E -- 044C50
9B 3D C5 5B E2 3E C5 2E 01 6A 3D 74 00 3D 83 5B -- 044C60
D9 9B 3D C5 5B DE 3E C5 2E 00 5C ED 99 9A 05 D9 -- 044C70
C5 2E 12 C4 83 00 34 30 4E 9A 00 5C ED 99 9A 05 -- 044C80
00 34 30 28 9A 06 97 E9 03 74 00 3D 83 5B F2 3E -- 044C90
2E 6D 75 00 01 3D 05 8B 5C 1E 3E C5 2E 06 8F E9 -- 044CA0
36 C4 2E B8 5E D9 9B 05 D9 9B 3D C5 5B DE 3E C5 -- 044CB0
3C 03 26 02 E7 C1 4F 3D 8B 5B D6 3E C5 2E 5B DE -- 044CC0
00 5C ED 94 9A B8 5E D8 9B 05 D9 9B 02 5C 8E 26 -- 044CD0
B0 5E D9 9B 05 D9 9B 3D C5 5B E2 3E C5 2E 3A 75 -- 044CE0
02 E7 C1 4F 3D 8B 5B D6 3E C5 2E 5B E2 36 C4 2E -- 044CF0
94 9A B0 5E D8 9B 05 D9 9B 02 5C 8E 26 3C 03 26 -- 044D00
D6 3E C5 2E 0D FF 5B D6 3E C5 2E 07 75 00 5C ED -- 044D10
46 89 F4 46 89 C0 2B F6 46 89 F8 46 89 05 8B 5B -- 044D20
04 F7 E9 03 74 00 01 3D 05 8B 5C 1E 3E C5 2E FA -- 044D30
2E 04 91 E9 03 75 00 3D 80 3D C5 5B DA 3E C5 2E -- 044D40
2E 04 81 E9 03 75 00 01 7D 80 3D C5 5B DA 3E C5 -- 044D50
2E 04 71 E9 03 75 00 02 7D 80 3D C5 5B DA 3E C5 -- 044D60
8E 26 3C 03 26 02 E7 C1 4F F8 7E 8B 5B DE 36 C4 -- 044D70
7E 8B 5B E2 36 C4 2E CC 5E D9 9B 05 D9 9B 02 5C -- 044D80
9B 05 D9 9B 02 5C 8E 26 3C 03 26 02 E7 C1 4F F8 -- 044D90
5E D9 9B 05 D9 9B 3D C5 5B DE 3E C5 2E D8 5E D9 -- 044DA0
2E DC 5E D9 9B 05 D9 9B 3D C5 5B E2 3E C5 2E D0 -- 044DB0
C5 2E D4 5E D9 9B 04 45 D9 9B 3D C5 5B DE 3E C5 -- 044DC0
46 8D 16 E0 5E D9 9B 04 45 D9 9B 3D C5 5B E2 3E -- 044DD0
4E E9 03 75 C0 0B 04 C4 83 00 64 33 32 9A 50 CC -- 044DE0
35 03 02 E6 C1 4E 4E F8 76 8B 5B DE 3E C5 2E 01 -- 044DF0

D9 9B 24 D8 26 9B 05 D9 9B 3D C5 02 45 8E 01 FE -- 044E00
35 03 02 E6 C1 4E F8 76 8B 5B DE 3E C5 2E EC 5E -- 044E10
F0 5E D9 9B 24 D8 26 9B 05 D9 9B 3D C5 02 45 8E -- 044E20
8E 35 03 02 E6 C1 4E 4E F8 76 8B 5B E2 3E C5 2E -- 044E30
```

```
2E  E4  5E  D9  9B  24  D8  26  9B  05  D9  9B  3D  C5  02  45  --  044E40
02  45  8E  35  03  02  E6  C1  4E  F8  76  8B  5B  E2  3E  C5  --  044E50
EE  D9  9B  E8  5E  D9  9B  24  D8  26  9B  05  D9  9B  3D  C5  --  044E60
5C  ED  94  9A  B8  5E  DC  9B  E4  46  D9  9B  B8  5E  DD  9B  --  044E70
E0  D9  9B  E4  46  D9  9B  07  EB  E4  46  D9  9B  06  76  00  --  044E80
00  9C  E9  03  73  00  5C  ED  94  9A  5C  22  1E  DC  2E  9B  --  044E90
9A  B0  5E  DC  9B  EC  46  D9  9B  B0  5E  DD  9B  EE  D9  9B  --  044EA0
EC  46  D9  9B  07  EB  EC  46  D9  9B  06  76  00  5C  ED  94  --  044EB0
6C  72  00  5C  ED  94  9A  5C  22  1E  DC  2E  9B  E0  D9  9B  --  044EC0
9B  EC  76  D8  9B  F0  46  D9  9B  B0  5E  DD  9B  EE  D9  9B  --  044ED0
9B  B8  66  DC  9B  E4  76  D8  9B  E8  46  D9  9B  B8  5E  DD  --  044EE0
D8  9B  F0  46  D9  9B  1A  76  00  5C  ED  94  9A  B0  5E  DC  --  044EF0
DC  9B  E4  76  D8  9B  E8  46  D9  9B  A8  5E  DD  9B  EC  76  --  044F00
A0  5E  DD  9B  EC  76  D8  9B  F0  46  D9  9B  1B  EB  A8  66  --  044F10
9B  E0  D9  9B  A0  66  DC  9B  E4  76  D8  9B  E8  46  D9  9B  --  044F20
01  FA  46  C7  05  73  00  5C  ED  94  9A  5C  22  1E  DC  2E  --  044F30
8B  5B  DE  36  C4  2E  02  29  E9  03  75  00  FA  7E  83  00  --  044F40
05  D9  9B  02  5C  8E  26  3C  03  26  02  E7  C1  4F  F8  7E  --  044F50
02  E7  C1  4F  F8  7E  8B  5B  E2  36  C4  2E  CC  5E  D9  9B  --  044F60
C5  2E  D8  5E  D9  9B  05  D9  9B  02  5C  8E  26  3C  03  26  --  044F70
DE  36  C4  2E  D0  56  D9  9B  05  D9  9B  3D  C5  5B  DE  3E  --  044F80
D9  9B  02  5C  8E  26  3C  03  26  02  E7  C1  F6  7E  8B  5B  --  044F90
2E  DC  56  D9  9B  05  D9  9B  3D  C5  5B  E2  3E  C5  2E  1D  --  044FA0
5C  8E  26  3C  03  26  02  E7  C1  F6  7E  8B  5B  E2  36  C4  --  044FB0
9B  04  45  D9  9B  3D  C5  5B  DE  3E  C5  2E  1D  D9  9B  02  --  044FC0
02  E7  C1  47  47  F6  7E  8B  5B  DE  36  C4  2E  D4  56  D9  --  044FD0
C5  5B  E2  3E  C5  2E  1D  D9  9B  02  5C  8E  26  3C  03  26  --  044FE0
7E  8B  5B  E2  36  C4  2E  E0  56  D9  9B  04  45  D9  9B  3D  --  044FF0
9B  02  5C  8E  26  3C  03  26  02  E7  C1  47  47  F6  01  FE  --  045000
5E  D9  9B  04  45  D9  9B  3D  C5  5B  DE  3E  C5  2E  1D  D9  --  045010
3C  03  26  02  E7  C1  4F  F8  7E  8B  5B  DE  36  C4  2E  B8  --  045020
2A  36  DC  2E  9B  B8  46  D8  9B  05  D9  9B  02  5C  8E  26  --  045030
04  45  D9  9B  3D  C5  5B  E2  3E  C5  2E  C8  5E  D9  9B  5C  --  045040
02  E7  C1  4F  F8  7E  8B  5B  E2  36  C4  2E  B8  5E  D9  9B  --  045050
2E  9B  B8  46  D8  9B  05  D9  9B  02  5C  8E  26  3C  03  26  --  045060
34  23  9A  50  CC  46  8D  16  C4  5E  D9  9B  5C  2A  36  DC  --  045070
EB  5C  32  06  DD  2E  9B  08  74  C0  0B  04  C4  83  00  64  --  045080
5B  E2  3E  C5  2E  C0  5E  D9  9B  5C  3A  06  DD  2E  9B  06  --  045090
C5  2E  50  52  02  55  8B  05  03  02  E0  C1  40  F6  46  8B  --  0450A0
52  02  55  8B  05  03  02  E0  C1  40  F6  46  8B  5B  DE  3E  --  0450B0
99  9A  C4  46  D9  9B  00  5C  ED  99  9A  C0  46  D9  9B  50  --  0450C0
E2  3E  C5  2E  00  5C  ED  99  9A  C8  46  D9  9B  00  5C  ED  --  0450D0
5B  DE  3E  C5  2E  00  5C  ED  99  9A  05  D9  9B  3D  C5  5B  --  0450E0
83  00  4C  B0  08  9A  00  5C  ED  99  9A  05  D9  9B  3D  C5  --  0450F0
36  C4  2E  08  45  D9  9B  3D  C5  5B  DE  3E  C5  2E  30  C4  --  045100
8E  26  3C  03  26  02  E7  C1  03  C7  83  F6  7E  8B  5B  DE  --  045110
08  45  D9  9B  3D  C5  5B  E2  3E  C5  2E  1D  D9  9B  02  5C  --  045120
03  26  02  E7  C1  03  C7  83  F6  7E  8B  5B  E2  36  C4  2E  --  045130
FE  46  C7  00  04  FC  46  C7  1D  D9  9B  02  5C  8E  26  3C  --  045140
5B  DA  36  C4  2E  01  35  E9  03  7C  04  FE  7E  83  00  00  --  045150
01  05  C6  02  5C  8E  26  3C  03  26  FE  7E  03  F6  7E  8B  --  045160
83  00  00  FE  46  C7  00  03  FC  46  C7  DD  EB  FE  46  FF  --  045170
FE  7E  8B  5B  DE  36  C4  2E  01  08  E9  03  7C  03  FE  7E  --  045180
F6  7E  8B  05  D9  9B  02  5C  8E  26  3C  03  26  02  E7  C1  --  045190

7E  8B  5B  E2  36  C4  2E  1D  D9  9B  3C  03  26  02  E7  C1  --  0451A0
7E  8B  05  D9  9B  02  5C  8E  26  3C  03  26  02  E7  C1  FE  --  0451B0
8B  5B  DA  36  C4  2E  1D  D9  9B  3C  03  26  02  E7  C1  F6  --  0451C0
FF  F6  46  FF  01  05  C6  02  5C  8E  26  3C  03  26  F6  7E  --  0451D0
C4  2E  05  D9  9B  3D  C5  5B  DE  3E  C5  2E  9B  EB  FE  46  --  0451E0
```

```
02 5C 8E 26 3C 03 26 02 E7 C1 F6 7E 8B 5B DE 36 -- 0451F0
2E 05 D9 9B 3D C5 5B E2 3E C5 2E 1D D9 9B 01 FE -- 045200
5C 8E 26 3C 03 26 02 E7 C1 F6 7E 8B 5B E2 36 C4 -- 045210
26 3C 03 26 F6 7E 8B 5B DA 36 C4 2E 1D D9 9B 02 -- 045220
3E C5 2E 50 EB 00 01 F4 46 C7 00 05 C6 02 5C 8E -- 045230
C1 F6 7E 8B 5B DE 36 C4 2E 05 D9 9B 3D C5 5B DE -- 045240
E2 3E C5 2E 1D D9 9B 02 5C 8E 26 3C 03 26 02 E7 -- 045250
E7 C1 F6 7E 8B 5B E2 36 C4 2E 05 D9 9B 3D C5 5B -- 045260
5B DA 36 C4 2E 1D D9 9B 02 5C 8E 26 3C 03 26 02 -- 045270
FC 46 C7 00 05 C6 02 5C 8E 26 3C 03 26 F6 7E 8B -- 045280
6A 4D 7D FC 46 3B FE 46 8B 00 00 FE 46 C7 00 01 -- 045290
E0 C1 48 05 8B 5B D6 3E C5 2E 5B E2 36 C4 2E 00 -- 0452A0
8B 5B DE 36 C4 2E 50 52 02 54 8B 26 04 03 26 02 -- 0452B0
97 9A 50 52 02 54 8B 26 04 03 26 02 E0 C1 48 05 -- 0452C0
3E C5 2E 05 FF 5B D6 3E C5 2E 0A C4 83 00 1C 01 -- 0452D0
00 F4 7E 83 AB EB FE 46 FF 05 75 00 3D 83 5B F2 -- 0452E0
42 3E C5 2E 17 75 00 3D 83 5B F2 3E C5 2E 21 74 -- 0452F0
C7 5C 42 3E C5 2E 00 1C 09 BC 9A 00 01 05 C7 5C -- 045300
3E C5 2E 05 89 5B D6 3E C5 2E F8 46 8B 00 00 05 -- 045310
C4 83 00 34 5A 79 9A 00 6A 11 74 00 3D 83 5B F2 -- 045320
9B 05 8B 5B F2 3E C5 2E 05 89 5B F2 3E C5 2E 02 -- 045330
05 C7 5C 12 3E C5 2E EC 8B 55 57 56 CB 5E 5F C9 -- 045340
FA 3E C5 2E 00 00 4C C8 57 56 CB 5E 5F C9 00 00 -- 045350
9B 5C 46 3E C5 2E 00 00 05 C7 73 74 00 3D 83 5B -- 045360
D9 9B 05 D9 9B 5C 4A 3E C5 2E BE 5E D9 9B 05 D9 -- 045370
2B 74 00 3D 83 5B F6 3E C5 2E 4D D0 46 C6 C2 5E -- 045380
64 40 D0 9A 02 02 68 03 6A 01 6A 50 B4 46 8D 16 -- 045390
D0 9A 01 FB 68 02 6A 50 B4 46 8D 16 0A C4 83 00 -- 0453A0
46 8D 16 00 6A 00 1C A0 2C 9A 08 C4 83 00 64 40 -- 0453B0
83 5B F6 3E C5 2E 06 C4 83 00 54 BC 7B 9A 50 B6 -- 0453C0
57 56 CB 5E 5F C9 9B 00 1C A0 52 9A 05 74 00 3D -- 0453D0
9B E9 03 75 00 3D 83 5C 0A 3E C5 2E 00 00 4C C8 -- 0453E0
C5 2E 00 8E E9 03 74 00 3D 83 5B FA 3E C5 2E 00 -- 0453F0
36 C4 2E 00 81 E9 03 7F 00 3D 83 5B D6 3E 01 FE -- 045400
9B 02 5C 8E 26 3C 03 26 02 E7 C1 4F 3D 8B 5B DE -- 045410
C4 2E BE 5E D9 9B 15 D9 9B 5C 46 3E C5 2E 05 D9 -- 045420
03 26 02 E7 C1 4F 3D 8B 5B D6 3E C5 2E 5B E2 36 -- 045430
15 D9 9B 5C 4A 3E C5 2E 05 D9 9B 02 5C 8E 26 3C -- 045440
D0 46 C6 00 01 05 C7 5B FA 3E C5 2E C2 5E D9 9B -- 045450
50 B4 46 8D 16 14 74 00 3D 83 5B F6 3E C5 2E 4D -- 045460
6A 0A C4 83 00 64 40 D0 9A 02 02 68 03 6A 01 6A -- 045470
C9 9B 06 C4 83 00 54 BC 7B 9A 50 B6 46 8D 16 01 -- 045480
00 3D 83 5C 4E 3E C5 2E EC 8B 55 57 56 CB 5E 5F -- 045490
3B 26 05 8B 5C 52 3E C5 2E 5C 56 36 C4 2E 16 75 -- 0454A0
57 56 CB 5E 5F C9 C0 2B 02 EB 00 01 B8 05 75 04 -- 0454B0
3D 83 5C 5A 3E C5 2E 00 00 DC 46 C7 00 00 80 C8 -- 0454C0
1E 8E 2E 5C 5E 3E 03 2E 03 E7 C1 3D 8B 1A 75 00 -- 0454D0
3E C5 2E 05 7D E9 03 7D 00 02 3D 06 45 8B 5C 60 -- 0454E0
8B 5C 5A 3E C5 2E 05 70 E9 03 74 00 3D 83 5B F2 -- 0454F0
05 8B 5C 60 1E 8E 2E 5C 5E 3E 03 2E 03 E7 C1 3D -- 045500
8B 26 5C 5A 36 C4 2E 8E 56 89 8C 46 89 02 55 8B -- 045510
8C 46 03 4A 06 45 6B 5C 5E 3E 03 2E 03 E7 C1 3C -- 045520
89 3C 55 8B 3A 45 8B F8 7E C5 FA 56 89 F8 46 89 -- 045530

56 89 90 46 89 40 55 8B 3E 45 8B 96 56 89 94 46 -- 045540
46 45 8B 9E 56 89 9C 46 89 44 55 8B 42 45 8B 92 -- 045550
05 8B 5C 12 3E C5 2E 9A 56 89 98 46 89 48 55 8B -- 045560
3D 80 3D C5 5B DA 3E C5 2E 2D 74 C0 0B E2 46 89 -- 045570
3E C5 2E 0F 74 00 3D 83 5C 0A 3E C5 2E 19 74 00 -- 045580
89 00 01 B8 03 EB 40 E4 2A 01 45 8A 3D C5 5C 62 -- 045590
```

311

EP 0 533 348 A2

```
05 8B 5C 5A 3E C5 2E 00 01 DE 46 C7 05 EB DE 46 -- 0455A0
A9 E9 03 7D 00 E6 7E 83 00 00 E0 46 C7 E6 46 89 -- 0455B0
60 1E 8E 2E 5C 5E 3E 03 2E 03 E7 C1 E6 7E 8B 04 -- 0455C0
D8 EB E6 4E FF 05 75 C0 0B EA 46 89 06 45 8B 5C -- 0455D0
5C 60 1E 8E 2E 5C 5E 36 03 2E 03 E6 C1 E6 76 8B -- 0455E0
89 FC 46 89 02 54 8B 04 03 4A C7 6B 4F EA 7E 8B -- 0455F0
E8 46 89 DE 46 8B 0F 75 00 E6 7E 83 FE 56 01 FE -- 045600
46 8B 00 00 E8 46 C7 05 EB 05 89 5C 56 3E C5 2E -- 045610
FC 7E C5 B0 7C E8 46 3B EC 46 8B EC 46 89 48 EA -- 045620
3A 45 3B 44 7C 07 7F 3C 55 3B 9E 56 8B 9C 46 8B -- 045630
07 7F 40 55 3B 9A 56 8B 98 46 8B FC 7E C5 3F 72 -- 045640
96 56 8B 94 46 8B FC 7E C5 2A 72 3E 45 3B 2F 7C -- 045650
8B FC 7E C5 15 77 42 45 3B 1A 7F 07 7C 44 55 3B -- 045660
76 46 45 3B 13 7C 07 7F 48 55 3B 92 56 8B 90 46 -- 045670
83 96 EB 4A FC 6E 83 EC 4E FF 00 01 E0 46 C7 0E -- 045680
45 D9 9B F8 7E C5 00 01 DC 46 C7 69 75 00 DC 7E -- 045690
45 D9 9B A8 5E D9 9B 2E 45 D9 9B AC 5E D9 9B 2A -- 0456A0
05 D9 9B A0 5E D9 9B 36 45 D9 9B A4 5E D9 9B 32 -- 0456B0
0C 45 D9 9B D4 5E D9 9B 08 45 D9 9B D8 5E D9 9B -- 0456C0
00 4C 3D 98 F0 46 88 E4 2A 1A 45 8A D0 5E D9 9B -- 0456D0
D9 9B 05 74 C0 0A F7 46 88 E4 2A 1B 45 8A 1C 75 -- 0456E0
7E 83 BC 5E D9 9B 1E 45 D9 9B F8 7E C5 07 EB EE -- 0456F0
46 C7 E4 46 89 C0 2B 02 EB 00 01 B8 05 75 00 E0 -- 045700
94 9A 2A 5D D8 9B AC 46 D9 9B FC 7E C5 00 01 E0 -- 045710
2E 5D D8 9B A8 46 D9 9B FC 7E C5 17 75 00 5C ED -- 045720
46 88 C0 2B 02 EB 00 01 B8 05 75 00 5C ED 94 9A -- 045730
5C ED 94 9A 32 5D D8 9B AC 46 D9 9B FC 7E C5 F5 -- 045740
94 9A 36 5D D8 9B A8 46 D9 9B FC 7E C5 17 75 00 -- 045750
C5 F4 46 88 C0 2B 02 EB 00 01 B8 05 75 00 5C ED -- 045760
75 00 5C ED 94 9A 2A 5D D8 9B A4 46 D9 9B FC 7E -- 045770
5C ED 94 9A 2E 5D D8 9B A0 46 D9 9B FC 7E C5 17 -- 045780
FC 7E C5 F3 46 88 C0 2B 02 EB 00 01 B8 05 75 00 -- 045790
C5 17 75 00 5C ED 94 9A 32 5D D8 9B A4 46 D9 9B -- 0457A0
75 00 5C ED 94 9A 36 5D D8 9B A0 46 D9 9B FC 7E -- 0457B0
75 00 F5 7E 80 F2 46 88 C0 2B 02 EB 00 01 B8 05 -- 0457C0
F2 7E 80 06 75 00 F3 7E 80 0C 75 00 F4 7E 80 12 -- 0457D0
8B E4 2A F3 46 8A C8 8B E4 2A F2 46 8A 75 74 00 -- 0457E0
03 C7 03 E4 2A F5 46 8A F8 8B E4 2A F4 46 8A F0 -- 0457F0
7E 80 06 75 00 E4 7E 83 F1 46 88 C1 03 C6 01 FE -- 045800
C7 5B F2 3E C5 2E 40 76 01 F1 7E 80 06 73 01 F1 -- 045810
05 89 5C 66 3E C5 2E FE 56 8B FC 46 8B 00 08 05 -- 045820
05 89 5C 6A 3E C5 2E FA 56 8B F8 46 8B 02 55 89 -- 045830
EC 46 8B 05 89 5C 4E 3E C5 2E E6 46 8B 02 55 89 -- 045840
1A 45 8A FC 7E C5 02 14 E9 05 89 5C 52 3E C5 2E -- 045850
7E 80 01 CB E9 03 74 4C F0 7E 80 EF 46 88 E4 2A -- 045860
D9 9B CC 5E D9 9B 05 D9 9B 01 A8 E9 03 74 4C EF -- 045870
D9 9B C4 5E D9 9B 08 45 D9 9B C8 5E D9 9B 04 45 -- 045880
C0 0A F6 46 88 E4 2A 1B 45 8A C0 5E D9 9B 0C 45 -- 045890
D9 9B 1E 45 D9 9B FC 7E C5 07 EB EE D9 9B 05 74 -- 0458A0
D9 9B 46 75 00 F6 7E 80 06 74 00 F7 7E 80 B8 5E -- 0458B0
5E DC 9B B8 66 D8 9B BC 46 D9 9B 88 5E DD 9B EE -- 0458C0
B8 66 D8 9B BC 46 D9 9B 0A 76 00 5C ED 94 9A 88 -- 0458D0

DC 2E 9B E0 D9 9B B8 66 D8 9B BC 46 D9 9B 0B EB -- 0458E0
3A E4 2A F7 46 8A 73 73 00 5C ED 94 9A 5C 22 1E -- 0458F0
D8 9B D8 46 D9 9B 35 74 00 F7 7E 80 69 75 F6 46 -- 045900
FF FA 76 FF FD 6C E9 03 74 00 5C ED 94 9A CC 5E -- 045910
54 47 9A 01 6A E4 76 FF FC 76 FF FE 76 FF F8 76 -- 045920
FF FE DB E9 FD 4C E9 03 75 C0 0B 0C C4 83 00 4C -- 045930
00 4C 59 06 9A FC 76 FF FE 76 FF F8 76 FF FA 76 -- 045940
```

312

```
F8 76 FF FA 76 FF FD 2E E9 03 75 C0 0B 08 C4 83 -- 045950
F7 7E 80 C0 EB 02 6A E4 76 FF FC 76 FF FE 76 FF -- 045960
EB D8 46 D9 9B B4 5E D9 9B D8 46 D9 9B 0E 74 00 -- 045970
9B B4 5E D9 9B CC 46 D9 9B 22 74 00 F6 7E 80 60 -- 045980
9B BC 46 D9 9B 88 5E DD 9B D4 66 D8 9B B4 46 D9 -- 045990
66 D8 9B B8 46 D9 9B 4C EB D0 46 D8 9B 88 4E DC -- 0459A0
5E DD 9B D4 4E D8 9B BC 46 D9 9B 80 5E DD 9B BC -- 0459B0
46 D8 9B 88 66 DC 9B CC 4E D8 9B B8 46 D9 9B 88 -- 0459C0
46 D9 9B B4 5E D9 9B 80 76 DC 9B C8 66 D8 9B D0 -- 0459D0
4E DC 9B B8 46 D9 9B 88 5E DD 9B CC 66 D8 9B B4 -- 0459E0
8D 16 50 B0 46 8D 16 B0 5E D9 9B C8 46 D8 9B 88 -- 0459F0
76 FF FE 76 FF F8 76 FF FA 76 FF 50 B4 46 01 FE -- 045A00
16 E9 14 C4 83 00 4C 54 47 9A 03 6A E4 76 FF FC -- 045A10
F8 76 FF FA 76 FF FC 76 FF FE 76 FF E4 76 FF FF -- 045A20
75 4C EF 7E 80 FE FC E9 0A C4 83 00 4C 4A EC 9A -- 045A30
FC 76 FF FE 76 FF F8 76 FF FA 76 FF E4 76 FF 11 -- 045A40
FF FA 76 FF E4 76 FF 35 FF 5C 06 3E C5 2E DE EB -- 045A50
FE C4 E9 00 4C 4F 16 9A FC 76 FF FE 76 FF F8 76 -- 045A60
C7 5B F2 3E C5 2E EC 8B 55 57 56 CB 5E 5F C9 9B -- 045A70
F2 3E C5 2E EC 8B 55 57 56 CB 5E 5F C9 00 00 05 -- 045A80
74 05 0B 02 45 8B 5C 62 3E C5 2E 00 00 05 C7 5B -- 045A90
C5 2E 04 C4 83 00 64 4E E3 9A 35 FF 02 75 FF 1B -- 045AA0
C5 2E F6 2B 00 00 02 45 C7 00 00 05 C7 5C 62 3E -- 045AB0
16 3E C5 2E 35 89 5C 1A 3E C5 2E 35 89 5C 72 3E -- 045AC0
02 55 89 05 89 5C 6E 3E C5 2E 99 C6 8B 35 89 5C -- 045AD0
8B 5B F6 3E C5 2E 00 00 0E C8 57 56 CB 5E 5F C9 -- 045AE0
02 45 C7 00 00 05 C7 5C 76 3E C5 2E FA 46 89 05 -- 045AF0
E7 C1 3D 8B 18 75 00 3D 83 5C 5A 3E C5 2E 00 00 -- 045B00
75 00 06 7D 83 5C 60 1E 8E 2E 5C 5E 3E 03 2E 03 -- 045B10
03 2E 03 E3 C1 1D 8B 5C 5A 3E C5 2E 01 78 E9 03 -- 045B20
3E 03 2E 03 E7 C1 3D 8B 5C 60 06 8E 2E 5C 5E 1E -- 045B30
03 26 4A C6 6B 4E 06 75 8B 5C 60 1E 8E 2E 5C 5E -- 045B40
5C 76 3E C5 2E FE 56 89 FC 46 89 02 57 8B 26 07 -- 045B50
FF 5C 1A 36 C5 2E 5C 62 1E C4 2E 02 55 89 05 89 -- 045B60
46 89 E4 2A 05 8A 02 5F 8E 26 3F 03 26 3C 8B 0C -- 045B70
DD E9 03 7C F6 46 3B F8 46 8B 00 00 F8 46 C7 F6 -- 045B80
8D 16 0D FF 5B CA 3E C5 2E 32 74 00 FA 7E 83 00 -- 045B90
83 00 64 40 D0 9A 02 02 68 03 6A 35 FF 50 F2 46 -- 045BA0
64 40 D0 9A 01 FB 68 02 6A 50 F2 46 8D 16 0A C4 -- 045BB0
3D 83 5C 7A 3E C5 2E 00 1C A0 2C 9A 08 C4 83 00 -- 045BC0
00 54 BC 7B 9A FC 76 FF FE 76 FF 00 6A 10 75 00 -- 045BD0
C5 2E 00 1C A0 52 9A 05 74 00 FA 7E 83 06 C4 83 -- 045BE0
1E 8E 2E 5C 5E 3E 03 2E 03 E7 C1 3D 8B 5C 5A 3E -- 045BF0
E7 C1 3D 8B 5C 5A 3E C5 2E 06 4D FF 5C 60 01 FE -- 045C00
75 00 06 7D 83 5C 60 1E 8E 2E 5C 5E 3E 03 2E 03 -- 045C10
C1 1D 8B 0D FF 3B 74 00 3D 83 5C 5A 3E C5 2E 45 -- 045C20
5A 36 8B 2E 5C 60 06 8E 2E 5C 5E 1E 03 2E 03 E3 -- 045C30
5C 60 1E 8E 2E 5C 5E 36 03 2E 03 E6 C1 34 8B 5C -- 045C40
46 89 02 57 8B 26 07 03 26 4A C7 6B 4F 04 7C 8B -- 045C50
FF 18 E9 F8 46 FF 4A FC 6E 83 04 EB FE 56 89 FC -- 045C60
2E 5C 16 36 C4 2E 16 74 00 3D 83 5C 12 3E C5 2E -- 045C70

02 EB 00 01 B8 05 7E 04 3B 26 05 8B 5C 1A 3E C5 -- 045C80
5F C9 FE 58 E9 03 74 00 F4 7E 83 F4 46 89 C0 2B -- 045C90
00 3D 83 5C 06 3E C5 2E 00 00 08 C8 57 56 CB 5E -- 045CA0
7E 3E C5 2E 5F 75 00 3D 83 5B F6 3E C5 2E 69 75 -- 045CB0
4B 75 00 3D 83 5C 7A 3E C5 2E 55 75 00 3D 83 5C -- 045CC0
FE 56 89 FC 46 89 02 55 8B 05 8B 5C 5E 3E C5 2E -- 045CD0
05 7E 05 F8 7E 83 4A FC 46 83 F8 46 89 06 45 8B -- 045CE0
F8 46 3B FA 46 8B 00 01 FA 46 C7 00 05 F8 46 C7 -- 045CF0
```

313

```
83  00  54  BC  7B  9A  FC  76  FF  FE  76  FF  01  6A  19  7D  --  045D00
56  CB  5E  5F  C9  DF  EB  4A  FC  46  83  FA  46  FF  06  C4  --  045D10
C7  00  00  F4  46  C7  00  00  F2  46  C7  00  00  0E  C8  57  --  045D20
67  7F  05  3B  F6  46  8B  5C  5A  3E  C5  2E  00  00  F6  46  --  045D30
5C  60  1E  8E  2E  5C  5E  3E  03  2E  03  E7  C1  F6  7E  8B  --  045D40
E7  C1  F6  7E  8B  FE  56  89  FC  46  89  02  55  8B  05  8B  --  045D50
00  FA  46  C7  F8  46  89  06  45  8B  5C  5E  3E  03  2E  03  --  045D60
41  1A  7D  80  FC  7E  C5  29  7D  F8  46  3B  FA  46  8B  00  --  045D70
75  4C  1A  7D  80  FC  7E  C5  0D  EB  2E  F2  46  83  06  75  --  045D80
4A  FC  46  83  FA  46  FF  00  F4  56  83  18  F2  46  83  08  --  045D90
5E  5F  C9  F4  56  8B  F2  46  8B  8D  EB  F6  46  FF  CF  EB  --  045DA0
0B  02  45  8B  5C  5E  3E  C5  2E  00  00  08  C8  57  56  CB  --  045DB0
05  0B  02  45  8B  5B  DE  3E  C5  2E  00  84  E9  03  75  05  --  045DC0
55  8B  05  8B  5C  5E  3E  C5  2E  00  34  43  02  9A  78  74  --  045DD0
01  3D  05  8B  5C  1E  3E  C5  2E  FE  56  89  FC  46  89  02  --  045DE0
2E  1F  74  00  3D  80  3D  C5  5B  DA  3E  C5  2E  2B  75  00  --  045DF0
C5  2E  12  74  00  01  7D  80  3D  C5  5B  DA  3E  C5  01  FE  --  045E00
03  EB  00  02  B8  05  74  00  02  7D  80  3D  C5  5B  DA  3E  --  045E10
46  3B  FA  46  8B  00  00  FA  46  C7  F8  46  89  00  01  B8  --  045E20
00  54  BC  7B  9A  FC  76  FF  FE  76  FF  00  6A  19  7D  F8  --  045E30
CB  5E  5F  C9  DF  EB  4A  FC  46  83  FA  46  FF  06  C4  83  --  045E40
00  00  F6  46  C7  00  00  F4  46  C7  00  00  0C  C8  57  56  --  045E50
C1  F6  7E  8B  63  7F  05  3B  F6  46  8B  5C  5A  3E  C5  2E  --  045E60
55  8B  05  8B  5C  60  1E  8E  2E  5C  5E  3E  03  2E  03  E7  --  045E70
3E  03  2E  03  E7  C1  F6  7E  8B  FE  56  89  FC  46  89  02  --  045E80
FA  46  8B  00  00  FA  46  C7  F8  46  89  06  45  8B  5C  5E  --  045E90
BC  7B  9A  FC  76  FF  FE  76  FF  01  6A  25  7D  F8  46  3B  --  045EA0
46  FF  03  74  4D  1A  7D  80  FC  7E  C5  06  C4  83  00  54  --  045EB0
2E  91  EB  F6  46  FF  D3  EB  4A  FC  46  83  FA  46  FF  F4  --  045EC0
00  1C  19  66  9A  01  6A  0C  74  00  3D  83  5C  06  3E  C5  --  045ED0
5B  FA  3E  C5  2E  0E  74  00  F4  7E  83  14  EB  02  C4  83  --  045EE0
C8  57  56  CB  5E  5F  C9  00  34  43  8A  9A  00  00  05  C7  --  045EF0
E9  03  75  05  0B  02  45  8B  5C  76  3E  C5  2E  00  00  1C  --  045F00
2E  01  41  E9  03  74  00  3D  83  5C  7E  3E  C5  2E  01  4E  --  045F10
C5  2E  F5  46  88  E4  2A  1A  45  8A  3D  C5  5C  76  3E  C5  --  045F20
56  89  F0  46  89  3C  55  8B  3A  45  8B  3D  C5  5C  76  3E  --  045F30
46  89  40  55  8B  3E  45  8B  3D  C5  5C  76  3E  C5  2E  F2  --  045F40
55  8B  42  45  8B  3D  C5  5C  76  3E  C5  2E  EE  56  89  EC  --  045F50
45  8B  3D  C5  5C  76  3E  C5  2E  EA  56  89  E8  46  89  44  --  045F60
2E  00  00  F6  46  C7  E6  56  89  E4  46  89  48  55  8B  46  --  045F70
7E  8B  00  C4  E9  03  7E  05  3B  F6  46  8B  5C  5A  3E  C5  --  045F80
05  8B  5C  60  1E  8E  2E  5C  5E  3E  03  2E  03  E7  C1  F6  --  045F90
2E  03  E7  C1  F6  7E  8B  FE  56  89  FC  46  89  02  55  8B  --  045FA0
8B  00  00  FA  46  C7  F8  46  89  06  45  8B  5C  5E  3E  03  --  045FB0
F5  46  8A  FC  7E  C5  00  82  E9  03  7C  F8  46  3B  FA  46  --  045FC0
7F  F2  56  3B  44  55  8B  42  45  8B  51  75  1A  45  3A  98  --  045FD0
55  8B  46  45  8B  FC  7E  C5  3F  72  F0  46  3B  44  7C  07  --  045FE0
FC  7E  C5  2A  72  EC  46  3B  2F  7C  07  7F  EE  56  3B  48  --  045FF0
3B  1A  7F  07  7C  EA  56  3B  3C  55  8B  3A  45  8B  01  FE  --  046000
E6  56  3B  40  55  8B  3E  45  8B  FC  7E  C5  15  77  E8  46  --  046010

4A  FC  46  83  FA  46  FF  09  76  E4  46  3B  0E  7C  07  7F  --  046020
76  FF  01  6A  ED  75  00  3D  83  5C  7A  3E  C5  2E  8F  EB  --  046030
46  FF  DB  EB  06  C4  83  00  54  BC  7B  9A  FC  76  FF  FE  --  046040
02  45  C7  00  00  05  C7  5C  76  3E  C5  2E  FF  2D  E9  F6  --  046050
72  36  C4  2E  00  00  08  C8  57  56  CB  5E  5F  C9  00  00  --  046060
3E  C5  2E  60  75  04  3B  26  05  8B  5C  1A  3E  C5  2E  5C  --  046070
02  C4  83  00  64  4E  56  9A  35  FF  00  C8  05  81  5C  72  --  046080
05  0B  02  45  8B  5C  62  3E  C5  2E  FE  56  89  FC  46  89  --  046090
3E  C5  2E  35  FF  02  75  FF  FC  76  FF  52  57  56  2B  74  --  0460A0
```

```
5C 62 3E C5 2E 5E 5F 00 5C FE EC 9A 35 FF 5C 1A  --  0460B0
FC 46 8B 04 C4 83 00 64 4E E3 9A 35 FF 02 75 FF  --  0460C0
3E C5 2E 02 55 89 05 89 5C 62 3E C5 2E FE 56 8B  --  0460D0
36 C4 2E FA 56 89 F8 46 89 02 55 8B 05 8B 5C 62  --  0460E0
0A 46 8B FA 5E 8E F8 03 04 FF 26 3C 8B 26 5C 1A  --  0460F0
5B F2 3E C5 2E EC 8B 55 57 56 CB 5E 5F C9 05 88  --  046100
0A 46 DD 9B 00 00 08 C8 57 56 CB 5E 5F C9 05 8B  --  046110
F8 46 8D 16 FC 5E D9 9B 12 46 DD 9B F8 5E D9 9B  --  046120
3D 83 5B E6 3E C5 2E 04 C4 83 00 5C 17 65 9A 50  --  046130
9B 00 5C 17 88 9A 05 EB 00 34 2F 8A 9A 07 75 00  --  046140
C0 0B 00 34 44 3D 9A EC 8B 55 57 56 CB 5E 5F C9  --  046150
C8 57 56 CB 5E 5F C9 00 08 B8 03 EB C0 2B 04 74  --  046160
9B 05 D9 9B 0C 7E C5 28 75 01 0A 7E 83 00 00 34  --  046170
0C 7E C5 F0 5E D9 9B 05 D9 9B 10 7E C5 F4 5E D9  --  046180
EB 04 45 D9 9B 10 7E C5 EC 5E D9 9B 04 45 D9 9B  --  046190
9B 0E 5E 8E 0C 7E 03 02 E7 C1 4F 4F 0A 7E 8B 74  --  0461A0
7E 03 02 E7 C1 4F 4F 0A 7E 8B FC 5E D9 9B 05 D9  --  0461B0
C1 4F 0A 7E 8B F8 5E D9 9B 05 D9 9B 12 5E 8E 10  --  0461C0
8B F4 5E D9 9B 05 D9 9B 0E 5E 8E 0C 7E 03 02 E7  --  0461D0
9B 05 D9 9B 12 5E 8E 10 7E 03 02 E7 C1 4F 0A 7E  --  0461E0
9B 0E 5E 8E 0C 7E 03 02 E7 C1 0A 7E 8B F0 5E D9  --  0461F0
7E 03 02 E7 C1 0A 7E 8B EC 5E D9 9B 05 D9 01 FE  --  046200
DD 9B EE D9 9B E8 5E D9 9B 05 D9 9B 12 5E 8E 10  --  046210
94 9A D4 5E DC 9B F4 66 D8 9B EC 46 D9 9B D4 5E  --  046220
9B 0B EB F4 66 D8 9B EC 46 D9 9B 0A 76 00 5C ED  --  046230
5C 22 1E DC 2E 9B E0 D9 9B F4 66 D8 9B EC 46 D9  --  046240
D9 9B CC 5E DD 9B EE D9 9B 42 73 00 5C ED 94 9A  --  046250
76 00 5C ED 94 9A CC 5E DC 9B F0 66 D8 9B E8 46  --  046260
9B E8 46 D9 9B 0B EB F0 66 D8 9B E8 46 D9 9B 0A  --  046270
5C ED 94 9A 5C 22 1E DC 2E 9B E0 D9 9B F0 66 D8  --  046280
E9 03 75 01 0A 7E 83 01 74 E9 00 3E B8 06 73 00  --  046290
77 00 5C ED 94 9A F4 5E D8 9B EC 46 D9 9B 01 69  --  0462A0
24 73 00 5C ED 94 9A FC 5E D8 9B EC 46 D9 9B 0F  --  0462B0
E9 03 76 00 5C ED 94 9A FC 5E D8 9B EC 46 D9 9B  --  0462C0
73 00 5C ED 94 9A F4 5E D8 9B EC 46 D9 9B 01 39  --  0462D0
5C ED 94 9A F0 5E D8 9B E8 46 D9 9B 01 27 E9 03  --  0462E0
00 5C ED 94 9A F8 5E D8 9B E8 46 D9 9B 0F 77 00  --  0462F0
76 00 5C ED 94 9A F8 5E D8 9B E8 46 D9 9B 24 73  --  046300
5C ED 94 9A F0 5E D8 9B E8 46 D9 9B 00 F7 E9 03  --  046310
D9 9B FC 66 D8 9B F4 46 D9 9B 00 E5 E9 03 73 00  --  046320
5E DC 9B E4 46 D9 9B D4 5E DD 9B EE D9 9B E4 5E  --  046330
D9 9B 07 EB E4 46 D9 9B 06 76 00 5C ED 94 9A D4  --  046340
00 5C ED 94 9A 5C 22 1E DC 2E 9B E0 D9 9B E4 46  --  046350
66 D8 9B EC 46 D9 9B D4 5E DD 9B EE D9 9B 41 73  --  046360
EC 46 D9 9B 0A 76 00 5C ED 94 9A D4 5E DC 9B F4  --  046370
D9 9B F4 66 D8 9B EC 46 D9 9B 0B EB F4 66 D8 9B  --  046380
40 B8 6D 73 00 5C ED 94 9A 5C 22 1E DC 2E 9B E0  --  046390
9B E4 76 D8 9B F8 66 D8 9B F0 46 D9 9B 6A EB 00  --  0463A0
9B D4 5E DD 9B FC 66 D8 9B EC 46 D9 9B E0 5E D9  --  0463B0

9B DC 5E D9 9B F8 46 D8 9B D4 4E DC 9B E0 46 D9  --  0463C0
DC 9B E8 66 D8 9B DC 46 D9 9B D4 5E DD 9B EE D9  --  0463D0
66 D8 9B DC 46 D9 9B 0A 76 00 5C ED 94 9A D4 5E  --  0463E0
2E 9B E0 D9 9B E8 66 D8 9B DC 46 D9 9B 0B EB E8  --  0463F0
9B C0 2B 93 72 00 5C ED 94 9A 5C 22 1E DC 01 FE  --  046400
2E 5C 0E 36 C4 2E 00 00 0E C8 57 56 CB 5E 5F C9  --  046410
C5 2E 01 20 E9 03 74 04 3B 26 05 8B 5B D6 3E C5  --  046420
E0 C1 FE 46 89 00 05 05 05 8B 32 05 83 5C 0E 3E  --  046430
FC 56 89 FA 46 89 02 C4 83 00 64 4E 56 9A 50 02  --  046440
89 02 C4 83 00 64 4E 56 9A 50 02 E0 C1 FE 46 8B  --  046450
```

315

```
02  C4  83  00  64  4E  56  9A  FE  76  FF  F8  56  89  F6  46  --  046460
05  0B  02  45  8B  5B  DE  3E  C5  2E  F4  56  89  F2  46  89  --  046470
02  75  FF  FA  76  FF  FC  76  FF  57  56  00  99  E9  03  75  --  046480
FE  EC  9A  50  02  E0  C1  05  8B  5B  D6  3E  C5  2E  35  FF  --  046490
E2  3E  C5  2E  F6  76  FF  F8  76  FF  57  56  5E  5F  00  5C  --  0464A0
02  E0  C1  05  8B  5B  D6  3E  C5  2E  35  FF  02  75  FF  5B  --  0464B0
F2  76  FF  F4  76  FF  57  56  5E  5F  00  5C  FE  EC  9A  50  --  0464C0
FF  5B  D6  3E  C5  2E  35  FF  02  75  FF  5B  DA  3E  C5  2E  --  0464D0
02  75  FF  5B  DE  3E  C5  2E  5E  5F  00  5C  FE  EC  9A  35  --  0464E0
FF  5B  E2  3E  C5  2E  04  C4  83  00  64  4E  E3  9A  35  FF  --  0464F0
DA  3E  C5  2E  04  C4  83  00  64  4E  E3  9A  35  FF  02  75  --  046500
46  8B  04  C4  83  00  64  4E  E3  9A  35  FF  02  75  FF  5B  --  046510
46  8B  02  55  89  05  89  5B  DE  3E  C5  2E  FC  56  8B  FA  --  046520
46  8B  02  55  89  05  89  5B  E2  3E  C5  2E  F8  56  8B  F6  --  046530
5F  C9  02  55  89  05  89  5B  DA  3E  C5  2E  F4  56  8B  F2  --  046540
D9  9B  0A  7E  C5  0E  76  C4  00  00  32  C8  57  56  CB  5E  --  046550
9B  04  45  D9  9B  CE  5E  DD  9B  04  64  D8  26  9B  04  45  --  046560
9B  05  D9  9B  D6  5E  DD  9B  CE  4E  DC  9B  04  64  D8  26  --  046570
DC  9B  24  D8  26  9B  05  D9  9B  DE  5E  DD  9B  24  D8  26  --  046580
00  64  4E  FE  9A  00  5C  ED  99  9A  D6  46  DC  9B  DE  4E  --  046590
0A  7E  C5  EE  5E  D9  9B  5C  82  36  DC  2E  9B  08  C4  83  --  0465A0
04  45  D9  9B  0A  7E  C5  1D  D9  9B  12  7E  C5  05  D9  9B  --  0465B0
76  C4  04  16  46  83  04  12  46  83  1D  D9  9B  16  7E  C5  --  0465C0
ED  94  9A  04  5C  D8  26  9B  04  45  D9  9B  0A  7E  C5  0E  --  0465D0
06  DD  2E  9B  06  EB  5C  8A  06  DD  2E  9B  08  73  00  5C  --  0465E0
0E  76  C4  DE  5E  DD  9B  EE  D9  9B  F6  5E  D9  9B  5C  92  --  0465F0
DE  5E  DC  9B  24  D8  26  9B  05  D9  9B  0A  7E  C5  01  FE  --  046600
05  D9  9B  0A  7E  C5  0E  76  C4  0F  76  00  5C  ED  94  9A  --  046610
9B  05  D9  9B  0A  7E  C5  0E  76  C4  10  EB  24  D8  26  9B  --  046620
5C  ED  94  9A  5C  22  1E  DC  2E  9B  E0  D9  9B  24  D8  26  --  046630
C7  E6  5E  D9  9B  F6  4E  D8  9B  EE  46  D9  9B  41  73  00  --  046640
0A  7E  C5  01  FF  E9  03  7C  02  FE  7E  83  00  00  FE  46  --  046650
FC  45  D9  9B  16  7E  C5  1D  D9  9B  12  7E  C5  05  D9  9B  --  046660
46  83  04  12  46  83  FE  46  FF  1D  D9  9B  E6  46  D8  9B  --  046670
D8  26  9B  05  D9  9B  0A  7E  C5  0E  76  C4  D0  EB  04  16  --  046680
06  EB  5C  8A  06  DD  2E  9B  08  73  00  5C  ED  94  9A  1C  --  046690
5E  DD  9B  EE  D9  9B  FA  5E  D9  9B  5C  92  06  DD  2E  9B  --  0466A0
04  64  D8  26  9B  04  45  D9  9B  0A  7E  C5  0E  76  C4  DE  --  0466B0
7E  C5  0E  76  C4  11  76  00  5C  ED  94  9A  DE  5E  DC  9B  --  0466C0
C5  0E  76  C4  12  EB  04  64  D8  26  9B  04  45  D9  9B  0A  --  0466D0
2E  9B  E0  D9  9B  04  64  D8  26  9B  04  45  D9  9B  0A  7E  --  0466E0
9B  EE  46  D9  9B  42  73  00  5C  ED  94  9A  5C  22  1E  DC  --  0466F0
02  FE  7E  83  00  00  FE  46  C7  EA  5E  D9  9B  FA  4E  D8  --  046700
EA  46  D8  9B  FC  45  D9  9B  12  7E  C5  01  47  E9  03  7C  --  046710
1D  D9  9B  16  7E  C5  04  45  D9  9B  0A  7E  C5  1D  D9  9B  --  046720
0E  76  C4  CF  EB  04  16  46  83  04  12  46  83  FE  46  FF  --  046730
D9  9B  DE  5E  DD  9B  24  D8  26  9B  05  D9  9B  0A  7E  C5  --  046740
00  5C  ED  99  9A  DE  76  DC  9B  04  64  D8  26  9B  04  45  --  046750

9B  EE  D9  9B  F2  5E  D9  9B  08  C4  83  00  64  3E  62  9A  --  046760
64  2E  6A  9A  00  5C  ED  99  9A  F2  46  D9  9B  D6  5E  DD  --  046770
9B  13  76  00  5C  ED  94  9A  D6  5E  DC  9B  08  C4  83  00  --  046780
08  C4  83  00  64  2E  6A  9A  00  5C  ED  99  9A  F2  46  D9  --  046790
00  64  2E  6A  9A  00  5C  ED  99  9A  F2  46  D9  9B  14  EB  --  0467A0
DC  9B  EE  46  D9  9B  DE  5E  DD  9B  E0  D9  9B  08  C4  83  --  0467B0
5E  DD  9B  EE  D9  9B  EA  5E  D9  9B  FA  4E  D8  9B  DE  4E  --  0467C0
83  00  64  5A  DC  9A  00  5C  ED  99  9A  F2  46  D9  9B  D6  --  0467D0
46  D9  9B  13  76  00  5C  ED  94  9A  D6  5E  DC  9B  08  C4  --  0467E0
14  EB  08  C4  83  00  64  5A  DC  9A  00  5C  ED  99  9A  F2  --  0467F0
00  64  5A  DC  9A  00  5C  ED  99  9A  F2  46  D9  9B  01  FE  --  046800
```

316

```
DC 9B EE 46 D9 9B DE 5E DD 9B E0 D9 9B 08 C4 83 -- 046810
83 00 00 FE 46 C7 E6 5E D9 9B F6 4E D8 9B DE 4E -- 046820
EA 46 D8 9B FC 45 D9 9B 12 7E C5 29 7D 02 FE 7E -- 046830
D9 9B E6 46 D8 9B FC 45 D9 9B 16 7E C5 1D D9 9B -- 046840
C9 9B D1 EB 04 16 46 83 04 12 46 83 FE 46 FF 1D -- 046850
5C ED 99 9A 16 46 DD 9B EC 8B 55 57 56 CB 5E 5F -- 046860
10 76 FF 0A 76 FF 0C 76 FF 12 76 FF 14 76 FF 00 -- 046870
CB 5E 5F C9 9B 14 C4 83 00 34 58 26 9A 0E 76 FF -- 046880
04 45 D9 9B 0E 7E C5 0A 76 C4 00 00 24 C8 57 56 -- 046890
06 DD 2E 9B 08 73 00 5C ED 94 9A 04 5C D8 26 9B -- 0468A0
D9 9B F8 5E D9 9B 5C 92 06 DD 2E 9B 06 EB 5C 8A -- 0468B0
26 9B 05 D9 9B 0E 7E C5 0A 76 C4 EC 5E DD 9B EE -- 0468C0
0A 76 C4 0F 76 00 5C ED 94 9A EC 5E DC 9B 24 D8 -- 0468D0
C5 0A 76 C4 10 EB 24 D8 26 9B 05 D9 9B 0E 7E C5 -- 0468E0
1E DC 2E 9B E0 D9 9B 24 D8 26 9B 05 D9 9B 0E 7E -- 0468F0
C5 05 D9 9B 0E 7E C5 19 73 00 5C ED 94 9A 5B FE -- 046900
E9 5C 2A 36 DC 2E 9B 16 46 DD 9B 1D D9 9B 12 7E -- 046910
9A 1C D8 26 9B 05 D9 9B 0E 7E C5 0A 76 C4 01 A2 -- 046920
2E 9B 06 EB 5C 8A 06 DD 2E 9B 08 73 00 5C ED 94 -- 046930
C4 EC 5E DD 9B EE D9 9B FC 5E D9 9B 5C 92 06 DD -- 046940
DC 9B 04 64 D8 26 9B 04 45 D9 9B 0E 7E C5 0A 76 -- 046950
9B 0E 7E C5 0A 76 C4 11 76 00 5C ED 94 9A EC 5E -- 046960
0E 7E C5 0A 76 C4 12 EB 04 64 D8 26 9B 04 45 D9 -- 046970
1E DC 2E 9B E0 D9 9B 04 64 D8 26 9B 04 45 D9 9B -- 046980
DC 2E 9B 16 46 DD 9B 2C 73 00 5C ED 94 9A 5B FE -- 046990
D9 9B 0E 7E C5 EC 5E DD 9B FC 4E D8 9B 5C 2A 36 -- 0469A0
D9 9B 0E 7E C5 1D D9 9B 12 7E C5 EC 46 DC 9B 05 -- 0469B0
26 9B 05 D9 9B 0E 7E C5 0A 76 C4 01 12 E9 04 45 -- 0469C0
9B 04 64 D8 26 9B 04 45 D9 9B EC 5E DD 9B 24 D8 -- 0469D0
08 C4 83 00 64 3E 62 9A 00 5C ED 99 9A EC 76 DC -- 0469E0
9A F4 46 D9 9B DC 5E DD 9B EE D9 9B F4 5E D9 9B -- 0469F0
DC 9B 08 C4 83 00 64 2E 6A 9A 00 5C ED 99 01 FE -- 046A00
ED 99 9A F4 46 D9 9B 13 76 00 5C ED 94 9A DC 5E -- 046A10
F4 46 D9 9B 14 EB 08 C4 83 00 64 2E 6A 9A 00 5C -- 046A20
E0 D9 9B 08 C4 83 00 64 2E 6A 9A 00 5C ED 99 9A -- 046A30
DC 9B 5C 2A 36 DC 2E 9B 16 46 DD 9B E4 5E DD 9B -- 046A40
05 D9 9B 0E 7E C5 EC 5E DD 9B FC 4E D8 9B E4 4E -- 046A50
5E DD 9B EE D9 9B 1D D9 9B 12 7E C5 EC 46 DC 9B -- 046A60
83 00 64 5A DC 9A 00 5C ED 99 9A F4 46 D9 9B DC -- 046A70
46 D9 9B 13 76 00 5C ED 94 9A DC 5E DC 9B 08 C4 -- 046A80
14 EB 08 C4 83 00 64 5A DC 9A 00 5C ED 99 9A F4 -- 046A90
C4 83 00 64 5A DC 9A 00 5C ED 99 9A F4 46 D9 9B -- 046AA0
36 DC 2E 9B 16 46 DD 9B E4 5E DD 9B E0 D9 9B 08 -- 046AB0
7E C5 EC 5E DD 9B F8 4E D8 9B E4 4E DC 9B 5C 2A -- 046AC0
04 5D D9 9B 12 7E C5 EC 46 DC 9B 04 45 D9 9B 0E -- 046AD0
00 08 FE 46 C7 00 00 04 C8 57 56 CB 5E 5F C9 9B -- 046AE0
6A 3E C5 2E 00 98 E9 03 75 C0 0B 00 34 44 3D 9A -- 046AF0

5C 66 3E C5 2E FD 46 88 E4 2A 1A 45 8A 3D C5 5C -- 046B00
31 75 4C FD 7E 80 FC 46 88 E4 2A 1A 45 8A 3D C5 -- 046B10
66 3E C5 2E 01 6A 6D EB C0 2B 04 75 4C FC 7E 80 -- 046B20
35 FF 02 75 FF 5C 6A 3E C5 2E 35 FF 02 75 FF 5C -- 046B30
EB 00 08 B8 43 74 C0 0B 0A C4 83 00 4C 4A EC 9A -- 046B40
75 FF 5C 6A 3E C5 2E 01 6A 13 75 4C FC 7E 80 40 -- 046B50
2E 01 6A 0A 76 FF D1 EB 5C 66 3E C5 2E 35 FF 02 -- 046B60
75 FF 5C 66 3E C5 2E 35 FF 02 75 FF 5C 6A 3E C5 -- 046B70
2B BD 75 C0 0B 0C C4 83 00 4C 4F 16 9A 35 FF 02 -- 046B80
00 14 C8 57 56 CB 5E 5F C9 FE 46 8B FE 46 89 C0 -- 046B90
36 C4 2E 7F 7E 00 01 3D 05 8B 5B D6 3E C5 2E 00 -- 046BA0
9B 02 5C 8E 26 3C 03 26 02 E7 C1 4F 3D 8B 5B DE -- 046BB0
```

317

```
5B D6 3E C5 2E 5B E2 36 C4 2E F8 5E D9 9B 05 D9 -- 046BC0
05 D9 9B 02 5C 8E 26 3C 03 26 02 E7 C1 4F 3D 8B -- 046BD0
46 C7 00 01 F2 46 C7 00 01 F4 46 C7 FC 5E D9 9B -- 046BE0
46 8D 16 00 25 EC 46 C7 00 00 EE 46 C7 00 80 F0 -- 046BF0
F2 76 FF F0 76 FF EE 76 FF EC 76 FF 50 F6 01 FE -- 046C00
40 D0 9A 00 D9 68 09 6A F4 76 FF 50 F8 46 8D 16 -- 046C10
C9 9B 00 01 05 C7 5C 9A 3E C5 2E 16 C4 83 00 64 -- 046C20
00 6C 31 26 00 3C F0 FC 00 6C 31 24 00 CB 5E 5F -- 046C30
00 3C ED 64 00 3C F0 EC 00 3C ED 70 00 6C 31 44 -- 046C40
00 3C ED 5E 00 3C ED 6E 00 6C 31 38 00 3C F0 F0 -- 046C50
47 AE 14 7B 00 6C 31 1C 00 3C ED 7C 00 6C 31 36 -- 046C60
00 6C 31 1E 00 3C ED 6A 00 3C ED 72 3F 94 7A E1 -- 046C70
00 3C ED 76 00 6C 31 20 00 6C 31 3A 00 6C 31 22 -- 046C80
40 00 00 00 00 00 00 00 3F 50 62 4D D2 F1 A9 FC -- 046C90
3F D3 33 33 33 33 33 33 BF D3 33 33 33 33 33 33 -- 046CA0
00 6C 31 34 00 6C 31 40 00 6C 31 3C 00 3C ED 6C -- 046CB0
00 3C ED 80 00 3C ED 78 00 6C 31 30 00 6C 31 32 -- 046CC0
00 6C 33 D6 00 6C 31 4C 00 6C 31 48 00 6C 31 2A -- 046CD0
00 6C 33 A8 00 3C ED 68 00 6C 31 18 00 6C 31 2E -- 046CE0
3F F0 00 00 00 00 00 00 40 00 00 00 00 00 00 00 -- 046CF0
02 C8 57 56 00 6C 31 50 BF F0 00 00 00 00 00 00 -- 046D00
00 04 05 C7 89 1A 3E C5 2E 00 00 FE 46 C7 00 00 -- 046D10
C5 2E EE D9 9B 1D D9 9B 89 1E 3E C5 2E EE D9 9B -- 046D20
C5 2E 05 D9 9B 89 2A 3E C5 2E 1D D9 9B 89 22 3E -- 046D30
C5 2E 05 D9 9B 89 32 3E C5 2E 1D D9 9B 89 26 3E -- 046D40
06 7D 80 3D C5 89 36 3E C5 2E 1D D9 9B 89 2E 3E -- 046D50
52 9A 50 E1 68 00 6A 00 6A 00 6A 00 6A 13 74 00 -- 046D60
89 3A 3E C5 2E 00 64 22 15 9A 0A C4 83 00 64 28 -- 046D70
46 8D 16 00 00 05 C7 89 3E 3E C5 2E 00 00 05 C7 -- 046D80
F5 68 03 6A 50 05 8B 05 FF 89 42 3E C5 2E 50 FE -- 046D90
05 8B 89 42 3E C5 2E 0A C4 83 00 64 40 D0 9A 01 -- 046DA0
20 36 FF 2E 50 FE 46 8D 16 05 89 89 46 3E C5 2E -- 046DB0
00 64 40 D0 9A 01 F8 68 04 6A 89 1E 36 FF 2E 89 -- 046DC0
8B 05 FF 89 42 3E C5 2E 50 FE 46 8D 16 0C C4 83 -- 046DD0
2E 0A C4 83 00 64 40 D0 9A 01 F5 68 03 6A 50 05 -- 046DE0
3E C5 2E 05 89 89 4A 3E C5 2E 05 8B 89 42 3E C5 -- 046DF0
FE 76 FF 05 89 89 4E 3E C5 2E 05 8B 89 42 01 FE -- 046E00
00 05 C7 89 52 3E C5 2E 02 C4 83 00 64 59 DC 9A -- 046E10
1A 3E C5 2E 00 00 28 C8 57 56 CB 5E 5F C9 9B 00 -- 046E20
00 3D 83 89 56 3E C5 2E 14 75 00 09 3D 05 8B 89 -- 046E30
3E 3E C5 2E 02 C4 83 00 34 60 9C 9A 07 6A 0A 74 -- 046E40
03 6A 00 6A 00 6A 00 6A 13 75 00 1E 3D 05 8B 89 -- 046E50
00 54 C8 1C 9A 0A C4 83 00 64 28 52 9A 12 51 68 -- 046E60
8B 26 89 3E 1E C4 2E 00 01 05 C7 89 3A 3E C5 2E -- 046E70
60 16 8B 2E 89 5E 06 03 2E 22 C6 6B 07 FF 26 37 -- 046E80
3E C5 2E 57 56 02 55 89 05 89 89 5A 3E C5 2E 89 -- 046E90

9A 0F 6A 00 6A 50 00 03 05 05 8B 02 75 FF 89 5A -- 046EA0
00 5C E0 79 9A 50 D8 46 8D 16 5E 5F 00 8C 00 02 -- 046EB0
05 8B 89 1A 3E C5 2E 2A 7D 00 DC 7E 83 04 C4 83 -- 046EC0
83 00 1C 88 49 9A 50 D8 46 8D 16 0F 75 00 09 3D -- 046ED0
C4 83 00 34 87 4A 9A 50 D8 46 8D 16 37 EB 04 C4 -- 046EE0
16 0F 75 00 09 3D 05 8B 89 1A 3E C5 2E 28 EB 04 -- 046EF0
8D 16 0D EB 04 C4 83 00 34 85 55 9A 50 D8 46 8D -- 046F00
89 5A 3E C5 2E 04 C4 83 00 5C 29 2E 9A 50 D8 46 -- 046F10
C5 89 5A 3E C5 2E 1A 5D D9 9B E8 46 D9 9B 3D C5 -- 046F20
00 34 6B E7 9A 09 6A 1E 5D D9 9B EC 46 D9 9B 3D -- 046F30
34 7C 7D 9A 00 01 05 C7 89 52 3E C5 2E 02 C4 83 -- 046F40
54 C8 1C 9A 00 00 2C C8 57 56 CB 5E 5F C9 9B 00 -- 046F50
7E 83 04 C4 83 00 5C E0 79 9A 50 D8 46 8D 16 00 -- 046F60
```

318

```
OF 75 00 09 3D 05 8B 89 1A 3E C5 2E 2A 7D 00 DC -- 046F70
16 37 EB 04 C4 83 00 1C 88 49 9A 50 D8 46 8D 16 -- 046F80
C5 2E 28 EB 04 C4 83 00 34 87 4A 9A 50 D8 46 8D -- 046F90
9A 50 D8 46 8D 16 0F 75 00 09 3D 05 8B 89 1A 3E -- 046FA0
2E 9A 50 D8 46 8D 16 0D EB 04 C4 83 00 34 85 55 -- 046FB0
46 D9 9B 3D C5 89 5A 3E C5 2E 04 C4 83 00 5C 29 -- 046FC0
EC 46 D9 9B 3D C5 89 5A 3E C5 2E 12 5D D9 9B E8 -- 046FD0
C5 2E 02 C4 83 00 34 6B E7 9A 07 6A 16 5D D9 9B -- 046FE0
12 45 D9 9B 3D C5 89 5A 3E C5 2E 35 C4 89 5A 3E -- 046FF0
C5 2E 34 73 00 5C ED 94 9A 1A 5C D8 26 9B 01 FE -- 047000
3E C5 2E D4 5E D9 9B 12 45 D9 9B 3D C5 89 5A 3E -- 047010
9B 3D C5 89 5A 3E C5 2E 1A 45 D9 9B 3D C5 89 5A -- 047020
D9 9B D4 46 D9 9B 3D C5 89 5A 3E C5 2E 12 5D D9 -- 047030
3D C5 89 5A 3E C5 2E 35 C4 89 5A 3E C5 2E 1A 5D -- 047040
34 73 00 5C ED 94 9A 1E 5C D8 26 9B 16 45 D9 9B -- 047050
2E D4 5E D9 9B 16 45 D9 9B 3D C5 89 5A 3E C5 2E -- 047060
C5 89 5A 3E C5 2E 1E 45 D9 9B 3D C5 89 5A 3E C5 -- 047070
D4 46 D9 9B 3D C5 89 5A 3E C5 2E 16 5D D9 9B 3D -- 047080
2E 1A 45 D9 9B 3D C5 89 5A 3E C5 2E 1E 5D D9 9B -- 047090
D9 9B 3D C5 89 5A 3E C5 2E 1D D9 9B 89 62 3E C5 -- 0470A0
C5 89 5A 3E C5 2E 1D D9 9B 89 66 3E C5 2E 1E 45 -- 0470B0
3E C5 2E 1D D9 9B 89 6A 3E C5 2E 12 45 D9 9B 3D -- 0470C0
1D D9 9B 89 6E 3E C5 2E 16 45 D9 9B 3D C5 89 5A -- 0470D0
C7 89 52 3E C5 2E 02 C4 83 00 34 60 9C 9A 09 6A -- 0470E0
3D 05 8B 89 1A 3E C5 2E 00 34 7C 7D 9A 00 02 05 -- 0470F0
57 56 CB 5E 5F C9 9B 00 54 29 A2 9A 05 75 00 09 -- 047100
00 00 F6 46 C7 F8 5E D9 9B EE D9 9B 00 00 0A C8 -- 047110
89 20 36 FF 2E 50 F6 46 8D 16 35 75 07 0A 7E 83 -- 047120
83 00 64 40 D0 9A 01 F8 68 04 6A 89 1E 36 FF 2E -- 047130
03 6A 35 FF 89 4E 3E C5 2E 50 F6 46 8D 16 0C C4 -- 047140
89 72 3E C5 2E 0A C4 83 00 64 40 D0 9A 01 F6 68 -- 047150
36 FF 2E 89 74 36 FF 2E 50 F6 46 8D 16 03 05 C6 -- 047160
0E C4 83 00 64 40 D0 9A 6E 6A 05 6A 01 6A 89 72 -- 047170
8B FD 46 88 0A 46 8B 00 FC 46 C6 00 5C 28 00 9A -- 047180
16 50 F8 46 8D 16 50 F6 46 8D 16 FE 46 88 0A 46 -- 047190
FF 2E 89 66 36 FF 2E 89 68 36 FF 2E 50 FC 46 8D -- 0471A0
9A 00 CC 68 0B 6A 01 6A 89 62 36 FF 2E 89 64 36 -- 0471B0
F6 76 FF 0D 74 00 F6 7E 83 1A C4 83 00 64 40 D0 -- 0471C0
6A 50 F6 46 8D 16 2E EB 02 C4 83 00 64 59 DC 9A -- 0471D0
16 19 75 07 0A 7E 83 06 C4 83 00 34 EF B7 9A 00 -- 0471E0
01 F5 68 03 6A 35 FF 89 4E 3E C5 2E 50 F6 46 8D -- 0471F0
56 CB 5E 5F C9 9B 0A C4 83 00 64 40 D0 9A 01 FE -- 047200
C5 2E 57 56 00 02 05 C7 0A 7E C5 00 00 6E C8 57 -- 047210
0F 6A 00 6A 50 00 03 05 05 8B 02 75 FF 89 5A 3E -- 047220
88 7C 9A 0A 76 FF 0C 76 FF 5E 5F 00 8C 00 02 9A -- 047230

E9 03 75 00 03 3D 05 8B 0A 7E C5 04 C4 83 00 34 -- 047240
50 00 03 05 05 8B 02 75 FF 89 5A 3E C5 2E 07 08 -- 047250
6A 16 75 FF FF 3D 06 C4 83 00 5C D0 03 9A 0F 6A -- 047260
83 00 64 28 52 9A 12 60 68 00 6A 00 6A 00 6A 00 -- 047270
00 0E 45 C6 3D C5 89 5A 3E C5 2E 06 D5 E9 0A C4 -- 047280
C5 89 5A 3E C5 2E E4 2A 01 45 8A 89 76 3E C5 2E -- 047290
3E C5 2E E4 2A 05 8A 89 76 3E C5 2E 01 45 88 3D -- 0472A0
03 7D 80 3D C5 89 5A 3E C5 2E 05 88 3D C5 89 5A -- 0472B0
05 8B 02 75 FF 89 5A 3E C5 2E 06 94 E9 03 75 00 -- 0472C0
83 FE 46 89 04 C4 83 00 5C D3 8B 9A 50 00 03 05 -- 0472D0
FE 76 FF 00 6A 00 6A 00 6A 00 6A 16 74 00 FE 7E -- 0472E0
00 00 9A 46 C7 06 5F E9 0A C4 83 00 64 28 52 9A -- 0472F0
4D 75 00 92 7E 83 9A 46 FF 03 EB 00 00 92 46 C7 -- 047300
80 02 5C 8E 26 3C 03 26 9A 7E 8B 89 5A 36 C4 2E -- 047310
```

```
3F 03 26 9A 7E 8B 89 5A 1E C4 2E 38 74 00 03 7D -- 047320
7E 8B FF DF E6 81 F0 8B 98 03 45 8A 02 5F 8E 26 -- 047330
25 98 03 45 8A 89 7C 1E 8E 2E 89 7A 3E 03 2E 9A -- 047340
92 7E 83 AA EB 00 01 92 46 C7 B1 74 C6 3B FF DF -- 047350
89 7C 1E 8E 2E 89 7A 3E 03 2E 9A 7E 8B 29 75 00 -- 047360
2B 68 00 6A 00 6A 00 6A 00 6A 16 75 00 03 7D 80 -- 047370
7E 3E C5 2E 05 CE E9 0A C4 83 00 64 28 52 9A 20 -- 047380
89 84 36 FF 2E 57 56 02 02 E9 03 75 00 3D 83 89 -- 047390
5E 5F 00 8C 00 02 9A 12 6A 00 6A 89 82 36 FF 2E -- 0473A0
5A 3E C5 2E 89 86 36 FF 2E 89 88 36 FF 2E 57 56 -- 0473B0
FF 89 5A 3E C5 2E 50 00 03 05 05 8B 02 75 FF 89 -- 0473C0
04 C4 83 00 64 5C 0E 9A 50 00 03 05 05 8B 02 75 -- 0473D0
36 FF 2E 89 8C 36 FF 2E 5E 5F 00 5C FE EC 9A 50 -- 0473E0
64 5A 60 9A 89 86 36 FF 2E 89 88 36 FF 2E 89 8A -- 0473F0
E4 2A 01 45 8A 89 76 3E C5 2E 08 C4 83 00 01 FE -- 047400
E4 2A 05 8A 89 76 3E C5 2E 05 88 89 8E 3E C5 2E -- 047410
FF 2E 89 94 36 FF 2E 57 56 05 88 89 82 3E C5 2E -- 047420
57 56 5E 5F 00 8C 00 02 9A 12 6A 00 6A 89 92 36 -- 047430
FF 89 5A 3E C5 2E 89 96 36 FF 2E 89 98 36 FF 2E -- 047440
02 75 FF 89 5A 3E C5 2E 50 00 03 05 05 8B 02 75 -- 047450
9A 50 04 C4 83 00 64 5C 0E 9A 50 00 03 05 05 8B -- 047460
89 9A 36 FF 2E 89 9C 36 FF 2E 5E 5F 00 5C FE EC -- 047470
83 00 64 5A 60 9A 89 96 36 FF 2E 89 98 36 FF 2E -- 047480
9E 3E C5 2E E4 2A 01 45 8A 89 76 3E C5 2E 08 C4 -- 047490
92 3E C5 2E E4 2A 05 8A 89 76 3E C5 2E 05 88 89 -- 0474A0
FF 03 EB 00 00 92 46 C7 00 00 9A 46 C7 05 88 89 -- 0474B0
9A 7E 03 89 A2 3E C5 2E 37 75 00 92 7E 83 9A 46 -- 0474C0
98 05 8A 9A 7E 03 89 A2 3E C5 2E 2A 74 00 3D 80 -- 0474D0
05 8A 9A 7E 03 89 86 3E C5 2E FF DF E6 81 F0 8B -- 0474E0
83 C0 EB 00 01 92 46 C7 C7 74 C6 3B FF DF 25 98 -- 0474F0
00 3D 80 9A 7E 03 89 86 3E C5 2E 23 75 00 92 7E -- 047500
28 52 9A 20 2B 68 00 6A 00 6A 00 6A 00 6A 16 75 -- 047510
92 46 C7 00 00 9A 46 C7 04 34 E9 0A C4 83 00 64 -- 047520
3E C5 2E 37 75 00 92 7E 83 9A 46 FF 03 EB 00 00 -- 047530
03 89 A6 3E C5 2E 2A 74 00 3D 80 9A 7E 03 89 A6 -- 047540
89 96 3E C5 2E FF DF E6 81 F0 8B 98 05 8A 9A 7E -- 047550
92 46 C7 C7 74 C6 3B FF DF 25 98 05 8A 9A 7E 03 -- 047560
03 89 96 3E C5 2E 23 75 00 92 7E 83 C0 EB 00 01 -- 047570
68 00 6A 00 6A 00 6A 00 6A 16 75 00 3D 80 9A 7E -- 047580
3E C5 2E 03 BF E9 0A C4 83 00 64 28 52 9A 20 2B -- 047590
00 98 46 C7 00 CE E9 03 7F 00 01 3D 05 8B 89 3E -- 0475A0
3B 48 48 05 8B 89 3E 3E C5 2E 98 46 FF 03 EB 00 -- 0475B0
89 5E 06 03 2E 22 9A 46 6B 00 B3 E9 03 7D 98 46 -- 0475C0
C7 02 55 89 05 89 89 AA 3E C5 2E 89 60 16 8B 2E -- 0475D0

7E 83 9A 46 FF 03 EB 00 00 92 46 C7 00 00 9A 46 -- 0475E0
26 3C 03 26 9A 7E 8B 89 5A 36 C4 2E 4F 75 00 92 -- 0475F0
89 AA 36 C4 2E 3A 74 00 03 7D 80 02 5C 8E 01 FE -- 047600
C8 8B 98 03 45 8A 02 5C 8E 26 3C 03 26 9A 7E 8B -- 047610
26 3C 03 26 9A 7E 8B 89 5A 36 C4 2E FF DF E1 81 -- 047620
46 C7 AF 74 C1 3B FF DF 25 98 03 45 8A 02 5C 8E -- 047630
C4 2E FF 67 E9 03 74 00 92 7E 83 A8 EB 00 01 92 -- 047640
03 7D 80 02 5C 8E 26 3C 03 26 98 7E 8B 89 AA 36 -- 047650
52 68 03 6A 00 6A 00 6A 00 6A FF 4F E9 03 74 00 -- 047660
00 96 46 C7 02 E2 E9 0A C4 83 00 64 28 52 9A 12 -- 047670
FF 02 75 FF 89 5A 3E C5 2E 01 6A FF 6A 12 6A 00 -- 047680
00 5C 93 FD 9A 89 76 36 FF 2E 89 78 36 FF 2E 35 -- 047690
83 00 5C ED 6E 9A 50 EC 46 8D 16 50 52 0C C4 83 -- 0476A0
94 D5 9A 50 EC 46 8D 16 5B 75 00 FA 7E 83 0A C4 -- 0476B0
05 05 8B 02 75 FF 89 5A 3E C5 2E 04 C4 83 00 5C -- 0476C0
```

320

```
46  8D  16  89  AE  36  FF  2E  89  BO  36  FF  2E  50  00  03  --  0476DO
6A  50  9C  46  8D  16  OC  C4  83  00  5C  97  5E  9A  50  9C  --  0476EO
46  89  OA  C4  83  00  64  28  52  9A  20  07  68  01  6A  01  --  0476FO
00  01  OD  96  46  8B  02  54  E9  03  74  01  FE  7E  83  FE  --  047700
01  72  E9  03  75  00  3D  83  89  7E  3E  C5  2E  96  46  89  --  047710
89  82  36  FF  2E  89  84  36  FF  2E  01  6A  FF  6A  12  6A  --  047720
83  00  5C  93  FD  9A  89  76  36  FF  2E  89  78  36  FF  2E  --  047730
C4  83  00  5C  ED  6E  9A  50  EC  46  8D  16  50  52  OC  C4  --  047740
5C  94  D5  9A  50  EC  46  8D  16  57  75  00  FA  7E  83  OA  --  047750
FF  2E  89  86  36  FF  2E  89  88  36  FF  2E  04  C4  83  00  --  047760
97  5E  9A  50  9C  46  8D  16  89  B2  36  FF  2E  89  B4  36  --  047770
07  68  01  6A  01  6A  50  9C  46  8D  16  OC  C4  83  00  5C  --  047780
01  FE  7E  83  FE  46  89  OA  C4  83  00  64  28  52  9A  20  --  047790
12  6A  96  46  89  00  02  OD  96  46  8B  01  B9  E9  03  74  --  0477AO
FF  2E  89  92  36  FF  2E  89  94  36  FF  2E  01  6A  FF  6A  --  0477BO
OC  C4  83  00  5C  93  FD  9A  89  76  36  FF  2E  89  78  36  --  0477CO
83  OA  C4  83  00  5C  ED  6E  9A  50  EC  46  8D  16  50  52  --  0477DO
83  00  5C  94  D5  9A  50  EC  46  8D  16  57  75  00  FA  7E  --  0477EO
B8  36  FF  2E  89  96  36  FF  2E  89  98  36  FF  2E  04  C4  --  0477FO
97  5E  9A  50  9C  46  8D  16  89  B6  36  FF  2E  89  01  FE  --  047800
07  68  01  6A  01  6A  50  9C  46  8D  16  OC  C4  83  00  5C  --  047810
01  FE  7E  83  FE  46  89  OA  C4  83  00  64  28  52  9A  20  --  047820
C5  2E  96  46  89  00  04  OD  96  46  8B  01  2B  E9  03  74  --  047830
36  FF  2E  01  6A  1E  74  96  46  23  02  45  8B  89  BA  3E  --  047840
76  36  FF  2E  89  78  36  FF  2E  89  82  36  FF  2E  89  84  --  047850
45  8B  89  BA  3E  C5  2E  OA  C4  83  00  5C  94  FB  9A  89  --  047860
36  FF  2E  89  94  36  FF  2E  01  6A  1E  74  96  46  23  04  --  047870
5C  94  FB  9A  89  76  36  FF  2E  89  78  36  FF  2E  89  92  --  047880
1E  74  96  46  23  05  8B  89  BA  3E  C5  2E  OA  C4  83  00  --  047890
78  36  FF  2E  35  FF  02  75  FF  89  5A  3E  C5  2E  01  6A  --  0478AO
7E  C5  OA  C4  83  00  5C  94  FB  9A  89  76  36  FF  2E  89  --  0478BO
7D  9A  00  03  05  C7  89  52  3E  C5  2E  00  01  05  C7  OA  --  0478CO
36  FF  2E  89  20  36  FF  2E  50  94  46  8D  16  00  34  7C  --  0478DO
16  OC  C4  83  00  64  40  DO  9A  01  F8  68  04  6A  89  1E  --  0478EO
01  F6  68  03  6A  35  FF  89  4E  3E  C5  2E  50  94  46  8D  --  0478FO
3E  C5  2E  50  94  46  8D  16  OA  C4  83  00  64  40  DO  9A  --  047900
C4  83  00  64  40  DO  9A  01  FA  68  03  6A  35  FF  89  46  --  047910
50  94  46  8D  16  02  C4  83  00  34  60  9C  9A  09  6A  OA  --  047920
9A  01  F8  68  04  6A  89  1E  36  FF  2E  89  20  36  FF  2E  --  047930
4E  3E  C5  2E  50  94  46  8D  16  OC  C4  83  00  64  40  DO  --  047940
OA  C4  83  00  64  40  DO  9A  01  F5  68  03  6A  35  FF  89  --  047950
9A  00  00  FE  46  C7  00  00  02  C8  57  56  CB  5E  5F  C9  --  047960
89  3E  36  C4  2E  OD  FF  89  3E  3E  C5  2E  00  54  C8  1C  --  047970

C5  2E  89  60  16  8B  2E  89  5E  06  03  2E  22  04  6B  26  --  047980
83  00  34  6B  E7  9A  07  6A  02  55  89  05  89  89  5A  3E  --  047990
52  3E  C5  2E  10  75  00  3D  83  89  3E  3E  C5  2E  02  C4  --  0479AO
52  3E  C5  2E  2D  EB  00  34  80  D8  9A  00  00  05  C7  89  --  0479BO
22  C6  6B  4E  35  8B  89  3E  3E  C5  2E  00  03  05  C7  89  --  0479CO
89  89  5A  3E  C5  2E  89  60  16  8B  2E  89  5E  06  03  2E  --  0479DO
C8  57  56  CB  5E  5F  C9  00  34  7C  7D  9A  02  55  89  05  --  0479EO
3E  C5  2E  00  54  C8  1C  9A  00  00  FE  46  C7  00  00  02  --  0479FO
2E  22  04  6B  26  89  3E  36  C4  2E  OD  FF  89  3E  01  FE  --  047A00
05  89  89  5A  3E  C5  2E  89  60  16  8B  2E  89  5E  06  03  --  047A10
3E  C5  2E  02  C4  83  00  34  6D  25  9A  07  6A  02  55  89  --  047A20
1D  D9  9B  89  62  3E  C5  2E  1A  45  D9  9B  3D  C5  89  5A  --  047A30
89  66  3E  C5  2E  1E  45  D9  9B  3D  C5  89  5A  3E  C5  2E  --  047A40
C5  2E  12  45  D9  9B  3D  C5  89  5A  3E  C5  2E  1D  D9  9B  --  047A50
45  D9  9B  3D  C5  89  5A  3E  C5  2E  1D  D9  9B  89  6A  3E  --  047A60
00  34  60  9C  9A  07  6A  1D  D9  9B  89  6E  3E  C5  2E  16  --  047A70
```

321

```
3E C5 2E 10 75 00 3D 83 89 3E 3E C5 2E 02 C4 83 -- 047A80
3E C5 2E 2D EB 00 34 80 D8 9A 00 00 05 C7 89 52 -- 047A90
C6 6B 4E 35 8B 89 3E 3E C5 2E 00 03 05 C7 89 52 -- 047AA0
89 5A 3E C5 2E 89 60 16 8B 2E 89 5E 06 03 2E 22 -- 047AB0
56 CB 5E 5F C9 9B 00 34 7C 7D 9A 02 55 89 05 89 -- 047AC0
2E 50 FE 46 8D 16 00 00 FE 46 C7 00 00 02 C8 57 -- 047AD0
DO 9A 01 F8 68 04 6A 89 1E 36 FF 2E 89 20 36 FF -- 047AE0
CO 36 FF 2E 12 74 00 FE 7E 83 0C C4 83 00 64 40 -- 047AF0
C5 2E 04 C4 83 00 5C 97 1E 9A 89 BE 36 FF 2E 89 -- 047B00
4E 3E C5 2E 50 FE 46 8D 16 00 00 05 C7 89 4A 3E -- 047B10
0A C4 83 00 64 40 DO 9A 01 F6 68 03 6A 35 FF 89 -- 047B20
F6 68 03 6A 35 FF 89 46 3E C5 2E 50 FE 46 8D 16 -- 047B30
2D 83 89 42 3E C5 2E 0A C4 83 00 64 40 DO 9A 01 -- 047B40
C2 36 FF 2E 89 C4 36 FF 2E 12 74 00 FE 7E 83 02 -- 047B50
3D 83 89 3A 3E C5 2E 04 C4 83 00 5C 97 1E 9A 89 -- 047B60
DO 9A 6F 6A 03 6A 03 6A 50 FE 46 8D 16 13 74 00 -- 047B70
9A 00 00 05 C7 89 1A 3E C5 2E 0A C4 83 00 64 40 -- 047B80
FE 46 8D 16 16 05 C6 89 72 3E C5 2E 00 64 23 6E -- 047B90
6A 05 6A 01 6A 89 72 36 FF 2E 89 74 36 FF 2E 50 -- 047BA0
05 C7 89 52 3E C5 2E 0E C4 83 00 64 40 DO 9A 6E -- 047BB0
00 FE 46 C7 00 00 02 C8 57 56 CB 5E 5F C9 00 00 -- 047BC0
89 1E 36 FF 2E 89 20 36 FF 2E 50 FE 46 8D 16 00 -- 047BD0
46 8D 16 0C C4 83 00 64 40 DO 9A 01 F8 68 04 6A -- 047BE0
DO 9A 01 F7 68 03 6A 35 FF 89 4E 3E C5 2E 50 FE -- 047BF0
3E C5 2E 50 FE 46 8D 16 0A C4 83 00 64 40 01 FE -- 047C00
C4 83 00 64 40 DO 9A 01 F7 68 03 6A 35 FF 89 46 -- 047C10
68 03 6A 35 FF 89 4E 3E C5 2E 50 FE 46 8D 16 0A -- 047C20
57 56 CB 5E 5F C9 0A C4 83 00 64 40 DO 9A 01 FA -- 047C30
FF 2E 89 74 36 FF 2E 50 FE 46 8D 16 00 00 02 C8 -- 047C40
C4 83 00 64 40 DO 9A 6E 6A 05 6A 01 6A 89 72 36 -- 047C50
00 00 FE 46 C7 00 00 02 C8 57 56 CB 5E 5F C9 0E -- 047C60
89 20 36 FF 2E 50 FE 46 8D 16 35 75 07 0A 7E 83 -- 047C70
83 00 64 40 DO 9A 01 F8 68 04 6A 89 1E 36 FF 2E -- 047C80
03 6A 35 FF 89 4E 3E C5 2E 50 FE 46 8D 16 0C C4 -- 047C90
89 72 3E C5 2E 0A C4 83 00 64 40 DO 9A 01 F6 68 -- 047CA0
36 FF 2E 89 74 36 FF 2E 50 FE 46 8D 16 03 05 C6 -- 047CB0
0E C4 83 00 64 40 DO 9A 6E 6A 05 6A 01 6A 89 72 -- 047CC0
6A 02 6A 0A 76 FF 50 FE 46 8D 16 00 5C 28 00 9A -- 047CD0
40 DO 9A 01 30 68 06 6A 35 FF 89 C6 3E C5 2E 01 -- 047CE0
DC 9A FE 76 FF 0B 74 00 FE 7E 83 10 C4 83 00 64 -- 047CF0
89 C6 3E C5 2E 50 FE 46 8D 16 02 C4 83 00 64 59 -- 047D00
83 0A C4 83 00 64 40 DO 9A 01 2F 68 03 6A 35 FF -- 047D10

02 C4 83 00 64 59 DC 9A FE 76 FF 0B 74 00 FE 7E -- 047D20
05 05 8B 02 75 FF 89 5A 3E C5 2E 50 FE 46 8D 16 -- 047D30
00 1A 05 05 8B 02 75 FF 89 5A 3E C5 2E 50 00 1E -- 047D40
12 C4 83 00 64 40 DO 9A 00 CA 68 07 6A 01 6A 50 -- 047D50
C4 83 00 64 59 DC 9A FE 76 FF 0B 74 00 FE 7E 83 -- 047D60
06 C4 83 00 34 EF B7 9A 00 6A 50 FE 46 8D 16 02 -- 047D70
89 4E 3E C5 2E 50 FE 46 8D 16 19 75 07 0A 7E 83 -- 047D80
C9 0A C4 83 00 64 40 DO 9A 01 F5 68 03 6A 35 FF -- 047D90
3D C5 89 5A 3E C5 2E 00 00 08 C8 57 56 CB 5E 5F -- 047DA0
9B 3D C5 89 5A 3E C5 2E FC 5E D9 9B 1A 45 D9 9B -- 047DB0
2E 05 D9 9B 89 CA 3E C5 2E F8 5E D9 9B 1E 45 D9 -- 047DC0
9B 89 CE 3E C5 2E 1A 5D D9 9B 3D C5 89 5A 3E C5 -- 047DD0
0A 76 FF 1E 5D D9 9B 3D C5 89 5A 3E C5 2E 05 D9 -- 047DE0
9B 3D C5 89 5A 3E C5 2E 02 C4 83 00 34 6B E7 9A -- 047DF0
3D C5 89 5A 3E C5 2E 1A 5D D9 9B FC 46 D9 01 FE -- 047E00
C8 57 56 CB 5E 5F C9 9B 1E 5D D9 9B F8 46 D9 9B -- 047E10
EO 79 9A 50 D8 46 8D 16 00 54 C8 1C 9A 00 00 2C -- 047E20
```

```
46 D9 9B 3C C5 26 89 5A 36 C4 2E 04 C4 83 00 5C -- 047E30
C5 26 89 5A 36 C4 2E E8 5E D9 9B 1A 45 D8 9B E8 -- 047E40
DC 7E 83 EC 5E D9 9B 1E 45 D8 9B EC 46 D9 9B 3C -- 047E50
16 0F 75 00 09 3D 05 8B 89 1A 3E C5 2E 2A 7D 00 -- 047E60
8D 16 37 EB 04 C4 83 00 1C 88 49 9A 50 D8 46 8D -- 047E70
3E C5 2E 28 EB 04 C4 83 00 34 87 4A 9A 50 D8 46 -- 047E80
55 9A 50 D8 46 8D 16 0F 75 00 09 3D 05 8B 89 1A -- 047E90
29 2E 9A 50 D8 46 8D 16 0D EB 04 C4 83 00 34 85 -- 047EA0
E8 46 D9 9B 3D C5 89 5A 3E C5 2E 04 C4 83 00 5C -- 047EB0
9B EC 46 D9 9B 3D C5 89 5A 3E C5 2E 12 5D D9 9B -- 047EC0
3E C5 2E 02 C4 83 00 34 6B E7 9A 07 6A 16 5D D9 -- 047ED0
9B 12 45 D9 9B 3D C5 89 5A 3E C5 2E 35 C4 89 5A -- 047EE0
89 5A 3E C5 2E 34 73 00 5C ED 94 9A 1A 5C D8 26 -- 047EF0
C5 89 5A 3E C5 2E D4 5E D9 9B 12 45 D9 9B 3D C5 -- 047F00
12 5D D9 9B 3D C5 89 5A 3E C5 2E 1A 45 D9 9B 3D -- 047F10
2E 1A 5D D9 9B D4 46 D9 9B 3D C5 89 5A 3E C5 2E -- 047F20
45 D9 9B 3D C5 89 5A 3E C5 2E 35 C4 89 5A 3E C5 -- 047F30
3E C5 2E 34 73 00 5C ED 94 9A 1E 5C D8 26 9B 16 -- 047F40
5A 3E C5 2E D4 5E D9 9B 16 45 D9 9B 3D C5 89 5A -- 047F50
D9 9B 3D C5 89 5A 3E C5 2E 1E 45 D9 9B 3D C5 89 -- 047F60
5D D9 9B D4 46 D9 9B 3D C5 89 5A 3E C5 2E 16 5D -- 047F70
62 3E C5 2E 1A 45 D9 9B 3D C5 89 5A 3E C5 2E 1E -- 047F80
2E 1E 45 D9 9B 3D C5 89 5A 3E C5 2E 1D D9 9B 89 -- 047F90
D9 9B 3D C5 89 5A 3E C5 2E 1D D9 9B 89 66 3E C5 -- 047FA0
C5 89 5A 3E C5 2E 1D D9 9B 89 6A 3E C5 2E 12 45 -- 047FB0
9A 09 6A 1D D9 9B 89 6E 3E C5 2E 16 45 D9 9B 3D -- 047FC0
00 02 05 C7 89 52 3E C5 2E 02 C4 83 00 34 60 9C -- 047FD0
75 00 09 3D 05 8B 89 1A 3E C5 2E 00 34 7C 7D 9A -- 047FE0
00 2C C8 57 56 CB 5E 5F C9 9B 00 54 29 A2 9A 05 -- 047FF0
E0 79 9A 50 D8 46 8D 16 00 54 C8 1C 9A 00 01 FE -- 048000
89 1A 3E C5 2E 2A 7D 00 DC 7E 83 04 C4 83 00 5C -- 048010
1C 88 49 9A 50 D8 46 8D 16 0F 75 00 09 3D 05 8B -- 048020
00 34 87 4A 9A 50 D8 46 8D 16 37 EB 04 C4 83 00 -- 048030
75 00 09 3D 05 8B 89 1A 3E C5 2E 28 EB 04 C4 83 -- 048040
0D EB 04 C4 83 00 34 85 55 9A 50 D8 46 8D 16 0F -- 048050
3E C5 2E 04 C4 83 00 5C 29 2E 9A 50 D8 46 8D 16 -- 048060
5A 3E C5 2E 1A 5D D9 9B E8 46 D9 9B 3D C5 89 5A -- 048070
89 5A 3E C5 2E 1E 5D D9 9B EC 46 D9 9B 3D C5 89 -- 048080
D8 26 9B 12 45 D9 9B 3D C5 89 5A 3E C5 2E 35 C4 -- 048090
3D C5 89 5A 3E C5 2E 34 73 00 5C ED 94 9A 1A 5C -- 0480A0
9B 3D C5 89 5A 3E C5 2E D4 5E D9 9B 12 45 D9 9B -- 0480B0

C5 2E 12 5D D9 9B 3D C5 89 5A 3E C5 2E 1A 45 D9 -- 0480C0
3E C5 2E 1A 5D D9 9B D4 46 D9 9B 3D C5 89 5A 3E -- 0480D0
9B 16 45 D9 9B 3D C5 89 5A 3E C5 2E 35 C4 89 5A -- 0480E0
89 5A 3E C5 2E 34 73 00 5C ED 94 9A 1E 5C D8 26 -- 0480F0
C5 89 5A 3E C5 2E D4 5E D9 9B 16 45 D9 9B 3D C5 -- 048100
16 5D D9 9B 3D C5 89 5A 3E C5 2E 1E 45 D9 9B 3D -- 048110
6A 1E 5D D9 9B D4 46 D9 9B 3D C5 89 5A 3E C5 2E -- 048120
00 34 6D 25 9A 07 6A 02 C4 83 00 34 60 9C 9A 07 -- 048130
C5 2E 1A 45 D9 9B 3D C5 89 5A 3E C5 2E 02 C4 83 -- 048140
45 D9 9B 3D C5 89 5A 3E C5 2E 1D D9 9B 89 62 3E -- 048150
3D C5 89 5A 3E C5 2E 1D D9 9B 89 66 3E C5 2E 1E -- 048160
5A 3E C5 2E 1D D9 9B 89 6A 3E C5 2E 12 45 D9 9B -- 048170
6A 1D D9 9B 89 6E 3E C5 2E 16 45 D9 9B 3D C5 89 -- 048180
C9 9B 00 34 7C 7D 9A 02 C4 83 00 34 60 9C 9A 09 -- 048190
8D 16 00 54 C8 1C 9A 00 00 2C C8 57 56 CB 5E 5F -- 0481A0
7D 00 DC 7E 83 04 C4 83 00 5C E0 79 9A 50 D8 46 -- 0481B0
46 8D 16 0F 75 00 09 3D 05 8B 89 1A 3E C5 2E 2A -- 0481C0
D8 46 8D 16 37 EB 04 C4 83 00 1C 88 49 9A 50 D8 -- 0481D0
```

```
89 1A 3E C5 2E 28 EB 04 C4 83 00 34 87 4A 9A 50 -- 0481E0
34 85 55 9A 50 D8 46 8D 16 0F 75 00 09 3D 05 8B -- 0481F0
29 2E 9A 50 D8 46 8D 16 0D EB 04 C4 83 00 01 FE -- 048200
E8 46 D9 9B 3D C5 89 5A 3E C5 2E 04 C4 83 00 5C -- 048210
9B EC 46 D9 9B 3D C5 89 5A 3E C5 2E 12 5D D9 9B -- 048220
C5 89 5A 3E C5 2E 35 C4 89 5A 3E C5 2E 16 5D D9 -- 048230
73 00 5C ED 94 9A 1A 5C D8 26 9B 12 45 D9 9B 3D -- 048240
D4 5E D9 9B 12 45 D9 9B 3D C5 89 5A 3E C5 2E 34 -- 048250
89 5A 3E C5 2E 1A 45 D9 9B 3D C5 89 5A 3E C5 2E -- 048260
46 D9 9B 3D C5 89 5A 3E C5 2E 12 5D D9 9B 3D C5 -- 048270
5A 3E C5 2E 35 C4 89 5A 3E C5 2E 1A 5D D9 9B D4 -- 048280
5C ED 94 9A 1E 5C D8 26 9B 16 45 D9 9B 3D C5 89 -- 048290
D9 9B 16 45 D9 9B 3D C5 89 5A 3E C5 2E 34 73 00 -- 0482A0
3E C5 2E 1E 45 D9 9B 3D C5 89 5A 3E C5 2E D4 5E -- 0482B0
9B 3D C5 89 5A 3E C5 2E 16 5D D9 9B 3D C5 89 5A -- 0482C0
C4 83 00 34 60 9C 9A 07 6A 1E 5D D9 9B D4 46 D9 -- 0482D0
89 5A 3E C5 2E 02 C4 83 00 34 6D 25 9A 07 6A 02 -- 0482E0
C5 2E 1D D9 9B 89 62 3E C5 2E 1A 45 D9 9B 3D C5 -- 0482F0
D9 9B 89 66 3E C5 2E 1E 45 D9 9B 3D C5 89 5A 3E -- 048300
6A 3E C5 2E 12 45 D9 9B 3D C5 89 5A 3E C5 2E 1D -- 048310
2E 16 45 D9 9B 3D C5 89 5A 3E C5 2E 1D D9 9B 89 -- 048320
C4 83 00 34 60 9C 9A 09 6A 1D D9 9B 89 6E 3E C5 -- 048330
00 2C C8 57 56 CB 5E 5F C9 9B 00 34 7C 7D 9A 02 -- 048340
00 5C E0 79 9A 50 D8 46 8D 16 00 54 C8 1C 9A 00 -- 048350
05 8B 89 1A 3E C5 2E 2A 7D 00 DC 7E 83 04 C4 83 -- 048360
83 00 1C 88 49 9A 50 D8 46 8D 16 0F 75 00 09 3D -- 048370
C4 83 00 34 87 4A 9A 50 D8 46 8D 16 37 EB 04 C4 -- 048380
16 0F 75 00 09 3D 05 8B 89 1A 3E C5 2E 28 EB 04 -- 048390
8D 16 0D EB 04 C4 83 00 34 85 55 9A 50 D8 46 8D -- 0483A0
89 5A 3E C5 2E 04 C4 83 00 5C 29 2E 9A 50 D8 46 -- 0483B0
C5 89 5A 3E C5 2E 12 5D D9 9B E8 46 D9 9B 3D C5 -- 0483C0
35 C4 89 5A 3E C5 2E 1E 5D D9 9B EC 46 D9 9B 3D -- 0483D0
1A 5C D8 26 9B 12 45 D9 9B 3D C5 89 5A 3E C5 2E -- 0483E0
D9 9B 3D C5 89 5A 3E C5 2E 34 73 00 5C ED 94 9A -- 0483F0
9B 3D C5 89 5A 3E C5 2E D4 5E D9 9B 12 45 01 FE -- 048400
C5 2E 12 5D D9 9B 3D C5 89 5A 3E C5 2E 1A 45 D9 -- 048410
3E C5 2E 1A 5D D9 9B D4 46 D9 9B 3D C5 89 5A 3E -- 048420
9B 16 45 D9 9B 3D C5 89 5A 3E C5 2E 35 C4 89 5A -- 048430
89 5A 3E C5 2E 34 73 00 5C ED 94 9A 1E 5C D8 26 -- 048440
C5 89 5A 3E C5 2E D4 5E D9 9B 16 45 D9 9B 3D C5 -- 048450

16 5D D9 9B 3D C5 89 5A 3E C5 2E 1E 45 D9 9B 3D -- 048460
6A 1E 5D D9 9B D4 46 D9 9B 3D C5 89 5A 3E C5 2E -- 048470
00 34 6D 25 9A 07 6A 02 C4 83 00 34 60 9C 9A 07 -- 048480
C5 2E 1A 45 D9 9B 3D C5 89 5A 3E C5 2E 02 C4 83 -- 048490
45 D9 9B 3D C5 89 5A 3E C5 2E 1D D9 9B 89 62 3E -- 0484A0
3D C5 89 5A 3E C5 2E 1D D9 9B 89 66 3E C5 2E 1E -- 0484B0
5A 3E C5 2E 1D D9 9B 89 6A 3E C5 2E 12 45 D9 9B -- 0484C0
6A 1D D9 9B 89 6E 3E C5 2E 16 45 D9 9B 3D C5 89 -- 0484D0
C9 9B 00 34 7C 7D 9A 02 C4 83 00 34 60 9C 9A 09 -- 0484E0
8D 16 00 54 C8 1C 9A 00 00 2C C8 57 56 CB 5E 5F -- 0484F0
7D 00 DC 7E 83 04 C4 83 00 5C E0 79 9A 50 D8 46 -- 048500
46 8D 16 0F 75 00 09 3D 05 8B 89 1A 3E C5 2E 2A -- 048510
D8 46 8D 16 37 EB 04 C4 83 00 1C 88 49 9A 50 D8 -- 048520
89 1A 3E C5 2E 28 EB 04 C4 83 00 34 87 4A 9A 50 -- 048530
34 85 55 9A 50 D8 46 8D 16 0F 75 00 09 3D 05 8B -- 048540
00 5C 29 2E 9A 50 D8 46 8D 16 0D EB 04 C4 83 00 -- 048550
D9 9B E8 46 D9 9B 3D C5 89 5A 3E C5 2E 04 C4 83 -- 048560
5D D9 9B EC 46 D9 9B 3D C5 89 5A 3E C5 2E 1A 5D -- 048570
9B 3D C5 89 5A 3E C5 2E 35 C4 89 5A 3E C5 2E 16 -- 048580
```

324

EP 0 533 348 A2

```
2E 34 73 00 5C ED 94 9A 1A 5C D8 26 9B 12 45 D9 -- 048590
C5 2E D4 5E D9 9B 12 45 D9 9B 3D C5 89 5A 3E C5 -- 0485A0
3D C5 89 5A 3E C5 2E 1A 45 D9 9B 3D C5 89 5A 3E -- 0485B0
9B D4 46 D9 9B 3D C5 89 5A 3E C5 2E 12 5D D9 9B -- 0485C0
C5 89 5A 3E C5 2E 35 C4 89 5A 3E C5 2E 1A 5D D9 -- 0485D0
73 00 5C ED 94 9A 1E 5C D8 26 9B 16 45 D9 9B 3D -- 0485E0
D4 5E D9 9B 16 45 D9 9B 3D C5 89 5A 3E C5 2E 34 -- 0485F0
3E C5 2E 1E 45 D9 9B 3D C5 89 5A 3E C5 2E 01 FE -- 048600
9B 3D C5 89 5A 3E C5 2E 16 5D D9 9B 3D C5 89 5A -- 048610
C4 83 00 34 60 9C 9A 07 6A 1E 5D D9 9B D4 46 D9 -- 048620
89 5A 3E C5 2E 02 C4 83 00 34 6D 25 9A 07 6A 02 -- 048630
C5 2E 1D D9 9B 89 62 3E C5 2E 1A 45 D9 9B 3D C5 -- 048640
D9 9B 89 66 3E C5 2E 1E 45 D9 9B 3D C5 89 5A 3E -- 048650
6A 3E C5 2E 12 45 D9 9B 3D C5 89 5A 3E C5 2E 1D -- 048660
2E 16 45 D9 9B 3D C5 89 5A 3E C5 2E 1D D9 9B 89 -- 048670
C4 83 00 34 60 9C 9A 09 6A 1D D9 9B 89 6E 3E C5 -- 048680
EC 8B 55 57 56 CB 5E 5F C9 9B 00 34 7C 7D 9A 02 -- 048690
34 60 9C 9A 09 6A 02 C4 83 00 34 6D 25 9A 07 6A -- 0486A0
2E 1A 45 D9 9B 3D C5 89 5A 3E C5 2E 02 C4 83 00 -- 0486B0
D9 9B 3D C5 89 5A 3E C5 2E 1D D9 9B 89 CA 3E C5 -- 0486C0
34 6D 25 9A 09 6A 1D D9 9B 89 CE 3E C5 2E 1E 45 -- 0486D0
07 6A EC 8B 55 57 56 CB 5E 5F C9 9B 02 C4 83 00 -- 0486E0
83 00 34 60 9C 9A 09 6A 02 C4 83 00 34 6D 25 9A -- 0486F0
3E C5 2E 12 45 D9 9B 3D C5 89 5A 3E C5 2E 02 C4 -- 048700
16 45 D9 9B 3D C5 89 5A 3E C5 2E 1D D9 9B 89 CA -- 048710
83 00 34 6D 25 9A 09 6A 1D D9 9B 89 CE 3E C5 2E -- 048720
25 9A 07 6A EC 8B 55 57 56 CB 5E 5F C9 9B 02 C4 -- 048730
02 C4 83 00 34 60 9C 9A 09 6A 02 C4 83 00 34 6D -- 048740
89 CA 3E C5 2E 12 45 D9 9B 3D C5 89 5A 3E C5 2E -- 048750
C5 2E 1E 45 D9 9B 3D C5 89 5A 3E C5 2E 1D D9 9B -- 048760
02 C4 83 00 34 6D 25 9A 09 6A 1D D9 9B 89 CE 3E -- 048770
34 6D 25 9A 07 6A EC 8B 55 57 56 CB 5E 5F C9 9B -- 048780
C5 2E 02 C4 83 00 34 60 9C 9A 09 6A 02 C4 83 00 -- 048790
D9 9B 89 CA 3E C5 2E 1A 45 D9 9B 3D C5 89 5A 3E -- 0487A0
CE 3E C5 2E 16 45 D9 9B 3D C5 89 5A 3E C5 2E 1D -- 0487B0
C9 9B 02 C4 83 00 34 6D 25 9A 09 6A 1D D9 9B 89 -- 0487C0
8D 16 00 54 C8 1C 9A 00 00 28 C8 57 56 CB 5E 5F -- 0487D0
7D 00 DC 7E 83 04 C4 83 00 5C E0 79 9A 50 D8 46 -- 0487E0
46 8D 16 0F 75 00 09 3D 05 8B 89 1A 3E C5 2E 2A -- 0487F0

8D 16 37 EB 04 C4 83 00 1C 88 49 9A 50 D8 01 FE -- 048800
3E C5 2E 28 EB 04 C4 83 00 34 87 4A 9A 50 D8 46 -- 048810
55 9A 50 D8 46 8D 16 0F 75 00 09 3D 05 8B 89 1A -- 048820
29 2E 9A 50 D8 46 8D 16 0D EB 04 C4 83 00 34 85 -- 048830
46 D9 9B 3C C5 26 89 5A 36 C4 2E 04 C4 83 00 5C -- 048840
5A 36 C4 2E 45 72 00 5C ED 94 9A 1A 5D D8 9B E8 -- 048850
5C ED 94 9A 12 5D D8 9B E8 46 D9 9B 3C C5 26 89 -- 048860
9B EC 46 D9 9B 3C C5 26 89 5A 36 C4 2E 2E 77 00 -- 048870
26 89 5A 36 C4 2E 17 72 00 5C ED 94 9A 1E 5D D8 -- 048880
76 00 5C ED 94 9A 16 5D D8 9B EC 46 D9 9B 3C C5 -- 048890
00 6A 00 6A 00 6A 00 6A 00 02 05 C7 0A 7E C5 1C -- 0488A0
9A 07 6A 3D EB 0A C4 83 00 64 28 52 9A 12 50 68 -- 0488B0
C4 83 00 34 60 9C 9A 09 6A 02 C4 83 00 34 6D 25 -- 0488C0
46 D9 9B 1D D9 9B 89 CA 3E C5 2E E8 46 D9 9B 02 -- 0488D0
00 01 05 C7 0A 7E C5 1D D9 9B 89 CE 3E C5 2E EC -- 0488E0
56 CB 5E 5F C9 9B 02 C4 83 00 34 6D 25 9A 09 6A -- 0488F0
9A 50 D8 46 8D 16 00 54 C8 1C 9A 00 00 30 C8 57 -- 048900
3E C5 2E 2A 7D 00 DC 7E 83 04 C4 83 00 5C E0 79 -- 048910
49 9A 50 D8 46 8D 16 0F 75 00 09 3D 05 8B 89 1A -- 048920
87 4A 9A 50 D8 46 8D 16 37 EB 04 C4 83 00 1C 88 -- 048930
```

325

EP 0 533 348 A2

```
09 3D 05 8B 89 1A 3E C5 2E 28 EB 04 C4 83 00 34 -- 048940
04 C4 83 00 34 85 55 9A 50 D8 46 8D 16 0F 75 00 -- 048950
2E 04 C4 83 00 5C 29 2E 9A 50 D8 46 8D 16 0D EB -- 048960
2E D4 5E D9 9B 25 D8 9B E8 46 D9 9B 89 CA 3E C5 -- 048970
2E D0 5E D9 9B 25 D8 9B EC 46 D9 9B 89 CE 3E C5 -- 048980
C5 2E D4 46 D8 9B 1A 45 D9 9B 3D C5 89 5A 3E C5 -- 048990
3D C5 89 5A 3E C5 2E 1A 5D D9 9B 3D C5 89 5A 3E -- 0489A0
9B 3D C5 89 5A 3E C5 2E D0 46 D8 9B 1E 45 D9 9B -- 0489B0
D8 9B 12 45 D9 9B 3D C5 89 5A 3E C5 2E 1E 5D D9 -- 0489C0
3E C5 2E 12 5D D9 9B 3D C5 89 5A 3E C5 2E D4 46 -- 0489D0
5A 3E C5 2E D0 46 D8 9B 16 45 D9 9B 3D C5 89 5A -- 0489E0
5A 3E C5 2E 89 1E 36 C4 2E 16 5D D9 9B 3D C5 89 -- 0489F0
ED 94 9A 1C D8 26 9B 1A 45 D9 9B 3D C5 89 01 FE -- 048A00
5A 3E C5 2E 05 D9 9B 89 1E 3E C5 2E 13 73 00 5C -- 048A10
5A 3E C5 2E 89 22 36 C4 2E 1A 5D D9 9B 3D C5 89 -- 048A20
00 5C ED 94 9A 1C D8 26 9B 1E 45 D9 9B 3D C5 89 -- 048A30
C5 89 5A 3E C5 2E 05 D9 9B 89 22 3E C5 2E 13 73 -- 048A40
C5 89 5A 3E C5 2E 89 26 36 C4 2E 1E 5D D9 9B 3D -- 048A50
13 76 00 5C ED 94 9A 1C D8 26 9B 12 45 D9 9B 3D -- 048A60
9B 3D C5 89 5A 3E C5 2E 05 D9 9B 89 26 3E C5 2E -- 048A70
9B 3D C5 89 5A 3E C5 2E 89 2E 36 C4 2E 12 5D D9 -- 048A80
C5 2E 13 76 00 5C ED 94 9A 1C D8 26 9B 16 45 D9 -- 048A90
5D D9 9B 3D C5 89 5A 3E C5 2E 05 D9 9B 89 2E 3E -- 048AA0
6D 25 9A 07 6A 02 C4 83 00 34 60 9C 9A 07 6A 16 -- 048AB0
1A 45 D9 9B 3D C5 89 5A 3E C5 2E 02 C4 83 00 34 -- 048AC0
9B 3D C5 89 5A 3E C5 2E 1D D9 9B 89 62 3E C5 2E -- 048AD0
89 5A 3E C5 2E 1D D9 9B 89 66 3E C5 2E 1E 45 D9 -- 048AE0
C5 2E 1D D9 9B 89 6A 3E C5 2E 12 45 D9 9B 3D C5 -- 048AF0
D9 9B 89 6E 3E C5 2E 16 45 D9 9B 3D C5 89 5A 3E -- 048B00
00 34 7C 7D 9A 02 C4 83 00 34 60 9C 9A 09 6A 1D -- 048B10
34 6D 25 9A 07 6A EC 8B 55 57 56 CB 5E 5F C9 9B -- 048B20
5F C9 02 C4 83 00 34 60 9C 9A 09 6A 02 C4 83 00 -- 048B30
46 8D 16 00 54 C8 1C 9A 00 00 38 C8 57 56 CB 5E -- 048B40
2A 7D 00 DC 7E 83 04 C4 83 00 5C E0 79 9A 50 D8 -- 048B50
D8 46 8D 16 0F 75 00 09 3D 05 8B 89 1A 3E C5 2E -- 048B60
50 D8 46 8D 16 37 EB 04 C4 83 00 1C 88 49 9A 50 -- 048B70
8B 89 1A 3E C5 2E 28 EB 04 C4 83 00 34 87 4A 9A -- 048B80
00 34 85 55 9A 50 D8 46 8D 16 0F 75 00 09 3D 05 -- 048B90

83 00 5C 29 2E 9A 50 D8 46 8D 16 0D EB 04 C4 83 -- 048BA0
9B 3C C5 26 89 5A 36 C4 2E 00 34 7A 99 9A 04 C4 -- 048BB0
C4 2E 45 72 00 5C ED 94 9A 1A 5D D8 9B E8 46 D9 -- 048BC0
94 9A 12 5D D8 9B E8 46 D9 9B 3C C5 26 89 5A 36 -- 048BD0
46 D9 9B 3C C5 26 89 5A 36 C4 2E 2E 77 00 5C ED -- 048BE0
5A 36 C4 2E 17 72 00 5C ED 94 9A 1E 5D D8 9B EC -- 048BF0
94 9A 16 5D D8 9B EC 46 D9 9B 3C C5 26 89 01 FE -- 048C00
00 6A 00 6A 00 05 05 C7 0A 7E C5 1D 76 00 5C ED -- 048C10
E9 0A C4 83 00 64 28 52 9A 12 50 68 00 6A 00 6A -- 048C20
5A 3E C5 2E C8 5E DD 9B 89 D2 06 DF 2E 9B 00 A1 -- 048C30
26 9B 1A 45 D9 9B 3D C5 89 5A 3E C5 2E 35 C4 89 -- 048C40
D2 06 DF 2E 9B D4 5E D9 9B C8 76 DC 9B 12 44 D8 -- 048C50
5A 3E C5 2E 35 C4 89 5A 3E C5 2E C8 5E DD 9B 89 -- 048C60
C8 76 DC 9B 16 44 D8 26 9B 1E 45 D9 9B 3D C5 89 -- 048C70
5C ED 94 9A D4 5E D8 9B E8 46 D9 9B D0 5E D9 9B -- 048C80
00 5C ED 94 9A D0 5E D8 9B EC 46 D9 9B 21 73 00 -- 048C90
05 C7 0A 7E C5 28 EB 00 01 05 C7 0A 7E C5 09 73 -- 048CA0
5C ED 94 9A D0 5E D8 9B EC 46 D9 9B 1F EB 00 03 -- 048CB0
C7 0A 7E C5 07 EB 00 02 05 C7 0A 7E C5 09 73 00 -- 048CC0
3E C5 2E EC 8B 55 57 56 CB 5E 5F C9 9B 00 04 05 -- 048CD0
00 01 05 C7 89 D4 3E C5 2E 20 75 00 3D 83 89 D4 -- 048CE0
```

326

```
83  00  14  F4  F5  9A  89  D8  36  FF  2E  89  DA  36  FF  2E  --  048CF0
EC  8B  55  57  56  CB  5E  5F  C9  00  34  7C  7D  9A  04  C4  --  048D00
C7  89  DC  3E  C5  2E  70  74  00  3D  83  89  D4  3E  C5  2E  --  048D10
34  80  D8  9A  30  EB  05  8B  89  52  3E  C5  2E  00  01  05  --  048D20
9A  33  EB  00  34  7F  C2  9A  00  34  80  D8  9A  3F  EB  00  --  048D30
00  34  80  D8  9A  27  EB  00  34  7D  2B  9A  00  34  80  D8  --  048D40
77  00  03  3D  16  EB  00  34  7D  2B  9A  00  34  80  67  9A  --  048D50
7C  B1  7C  A5  7C  9E  7C  DC  A7  FF  2E  D8  8B  E0  D1  11  --  048D60
C4  83  00  14  FA  45  9A  35  FF  89  D8  3E  C5  2E  7C  BD  --  048D70
57  56  CB  5E  5F  C9  00  00  05  C7  89  DC  3E  C5  2E  02  --  048D80
3E  C5  2E  18  74  00  3D  83  89  D4  3E  C5  2E  EC  8B  55  --  048D90
D4  3E  C5  2E  02  C4  83  00  14  F8  4D  9A  35  FF  89  D8  --  048DA0
2E  00  00  28  C8  57  56  CB  5E  5F  C9  00  00  05  C7  89  --  048DB0
5A  3E  C5  2E  02  7F  E9  03  75  00  3D  83  89  D4  3E  C5  --  048DC0
26  9B  12  45  D9  9B  3D  C5  89  5A  3E  C5  2E  35  C4  89  --  048DD0
C5  2E  35  C4  89  5A  3E  C5  2E  FC  5E  D9  9B  1A  64  D8  --  048DE0
D9  9B  1E  64  D8  26  9B  16  45  D9  9B  3D  C5  89  5A  3E  --  048DF0
9E  E9  03  75  00  3D  83  89  7E  3E  C5  2E  F8  5E  01  FE  --  048E00
26  9B  05  D9  9B  89  E0  3E  C5  2E  89  E4  36  C4  2E  00  --  048E10
89  E8  3E  C5  2E  89  EC  36  C4  2E  F0  5E  DD  9B  34  D8  --  048E20
89  E4  3E  C5  2E  E8  5E  DD  9B  34  D8  26  9B  05  D9  9B  --  048E30
F0  06  DC  2E  9B  F0  4E  DC  9B  0D  D8  9B  FC  46  D9  9B  --  048E40
46  89  08  C4  83  00  5C  EE  2F  9A  00  5C  ED  99  9A  89  --  048E50
0D  D8  9B  F8  46  D9  9B  89  EC  3E  C5  2E  E6  56  89  E4  --  048E60
9A  00  5C  ED  99  9A  89  F0  06  DC  2E  9B  E8  4E  DC  9B  --  048E70
3E  C5  2E  E2  56  89  E0  46  89  08  C4  83  00  5C  EE  2F  --  048E80
3E  C5  2E  DC  5E  D9  9B  35  D8  9B  E4  46  DB  9B  89  E0  --  048E90
2E  6A  EB  D8  5E  D9  9B  35  D8  9B  E0  46  DB  9B  89  E8  --  048EA0
F0  06  DC  2E  9B  0D  D8  9B  FC  46  D9  9B  89  E0  3E  C5  --  048EB0
46  89  08  C4  83  00  5C  EE  2F  9A  00  5C  ED  99  9A  89  --  048EC0
0D  D8  9B  F8  46  D9  9B  89  E8  3E  C5  2E  E6  56  89  E4  --  048ED0
00  5C  EE  2F  9A  00  5C  ED  99  9A  89  F0  06  DC  2E  9B  --  048EE0
DB  9B  89  E0  3E  C5  2E  E2  56  89  E0  46  89  08  C4  83  --  048EF0
DB  9B  89  E8  3E  C5  2E  DC  5E  D9  9B  35  D8  9B  E4  46  --  048F00
3D  C5  89  5A  3E  C5  2E  D8  5E  D9  9B  35  D8  9B  E0  46  --  048F10
C4  83  00  64  53  E8  9A  00  5C  ED  99  9A  1A  45  D9  9B  --  048F20
45  D9  9B  3D  C5  89  5A  3E  C5  2E  00  5C  ED  99  9A  08  --  048F30

99  9A  08  C4  83  00  64  53  E8  9A  00  5C  ED  99  9A  1E  --  048F40
36  FF  2E  89  FC  36  FF  2E  89  FE  36  FF  2E  00  5C  ED  --  048F50
00  5C  97  5E  9A  50  00  2C  05  89  F8  06  8B  2E  89  FA  --  048F60
99  9A  12  45  D9  9B  3D  C5  89  5A  3E  C5  2E  18  C4  83  --  048F70
00  5C  ED  99  9A  08  C4  83  00  64  53  E8  9A  00  5C  ED  --  048F80
00  5C  ED  99  9A  16  45  D9  9B  3D  C5  89  5A  3E  C5  2E  --  048F90
36  FF  2E  00  5C  ED  99  9A  08  C4  83  00  64  53  E8  9A  --  048FA0
F8  06  8B  2E  89  FA  36  FF  2E  8A  00  36  FF  2E  8A  02  --  048FB0
46  D9  9B  18  C4  83  00  5C  97  5E  9A  50  00  42  05  89  --  048FC0
99  9A  08  C4  83  00  64  53  E8  9A  00  5C  ED  99  9A  DC  --  048FD0
64  53  E8  9A  00  5C  ED  99  9A  D8  46  D9  9B  00  5C  ED  --  048FE0
FF  2E  8A  06  36  FF  2E  00  5C  ED  99  9A  08  C4  83  00  --  048FF0
05  89  F8  06  8B  2E  89  FA  36  FF  2E  8A  04  36  01  FE  --  049000
36  FF  2E  00  6A  18  C4  83  00  5C  97  5E  9A  50  00  58  --  049010
9B  9A  35  FF  89  D8  3E  C5  2E  89  F8  36  FF  2E  89  FA  --  049020
0F  75  00  3D  83  89  DC  3E  C5  2E  08  C4  83  00  14  F5  --  049030
9B  02  C4  83  00  14  FA  45  9A  35  FF  89  D8  3E  C5  2E  --  049040
3D  83  89  D4  3E  C5  2E  EC  8B  55  57  56  CB  5E  5F  C9  --  049050
45  D9  9B  3D  C5  89  5A  3E  C5  2E  00  8E  E9  03  75  00  --  049060
99  9A  08  C4  83  00  64  53  E8  9A  00  5C  ED  99  9A  1A  --  049070
99  9A  1E  45  D9  9B  3D  C5  89  5A  3E  C5  2E  00  5C  ED  --  049080
00  5C  ED  99  9A  08  C4  83  00  64  53  E8  9A  00  5C  ED  --  049090
```

```
2E 89 FA 36 FF 2E 8A 08 36 FF 2E 8A 0A 36 FF 2E -- 0490A0
18 C4 83 00 5C 97 5E 9A 50 00 2C 05 89 F8 06 8B -- 0490B0
D8 3E C5 2E 89 F8 36 FF 2E 89 FA 36 FF 2E 00 6A -- 0490C0
89 DC 3E C5 2E 08 C4 83 00 14 F5 9B 9A 35 FF 89 -- 0490D0
14 FA 45 9A 35 FF 89 D8 3E C5 2E 0F 75 00 3D 83 -- 0490E0
C5 2E EC 8B 55 57 56 CB 5E 5F C9 9B 02 C4 83 00 -- 0490F0
02 75 FF 89 5A 3E C5 2E 5E 74 00 3D 83 89 D4 3E -- 049100
8A 0C 36 FF 2E 8A 0E 36 FF 2E 50 00 03 05 05 8B -- 049110
83 00 5C 97 5E 9A 89 F8 36 FF 2E 89 FA 36 FF 2E -- 049120
C5 2E 89 F8 36 FF 2E 89 FA 36 FF 2E 00 6A 0C C4 -- 049130
3E C5 2E 08 C4 83 00 14 F5 9B 9A 35 FF 89 D8 3E -- 049140
45 9A 35 FF 89 D8 3E C5 2E 0F 75 00 3D 83 89 DC -- 049150
2E EC 8B 55 57 56 CB 5E 5F C9 02 C4 83 00 14 FA -- 049160
FF 2E 89 FA 36 FF 2E 8A 10 36 FF 2E 8A 12 36 FF -- 049170
8A 16 36 FF 2E 08 C4 83 00 64 5B B4 9A 89 F8 36 -- 049180
05 89 F8 06 8B 2E 89 FA 36 FF 2E 8A 14 36 FF 2E -- 049190
8A 1A 36 FF 2E 08 C4 83 00 64 5B B4 9A 50 00 16 -- 0491A0
05 89 F8 06 8B 2E 89 FA 36 FF 2E 8A 18 36 FF 2E -- 0491B0
8A 1E 36 FF 2E 08 C4 83 00 64 5B B4 9A 50 00 2C -- 0491C0
05 89 F8 06 8B 2E 89 FA 36 FF 2E 8A 1C 36 FF 2E -- 0491D0
8A 22 36 FF 2E 08 C4 83 00 64 5B B4 9A 50 00 42 -- 0491E0
05 89 F8 06 8B 2E 89 FA 36 FF 2E 8A 20 36 FF 2E -- 0491F0
36 FF 2E 08 C4 83 00 64 5B B4 9A 50 00 58 01 FE -- 049200
F8 06 8B 2E 89 FA 36 FF 2E 8A 24 36 FF 2E 8A 26 -- 049210
3E C5 2E 08 C4 83 00 64 5B B4 9A 50 00 6E 05 89 -- 049220
FF 2E 89 FA 36 FF 2E 00 6A 34 74 00 3D 83 89 D4 -- 049230
83 00 14 F5 9B 9A 35 FF 89 D8 3E C5 2E 89 F8 36 -- 049240
D8 3E C5 2E 0F 75 00 3D 83 89 DC 3E C5 2E 08 C4 -- 049250
56 CB 5E 5F C9 02 C4 83 00 14 FA 45 9A 35 FF 89 -- 049260
8B 89 1A 3E C5 2E 00 00 FE 46 C7 00 00 04 C8 57 -- 049270
03 6A 50 FE 46 8D 16 00 94 E9 03 74 00 04 3D 05 -- 049280
5C 28 00 9A 0A C4 83 00 64 40 D0 9A 6F 6A 03 6A -- 049290
50 FE 46 8D 16 FC 46 89 05 8B 89 4A 3E C5 2E 00 -- 0492A0
9A 01 F8 68 04 6A 89 1E 36 FF 2E 89 20 36 FF 2E -- 0492B0
4E 3E C5 2E 50 FE 46 8D 16 0C C4 83 00 64 40 D0 -- 0492C0
0A C4 83 00 64 40 D0 9A 01 F7 68 03 6A 35 FF 89 -- 0492D0

F7 68 03 6A 35 FF 89 46 3E C5 2E 50 FE 46 8D 16 -- 0492E0
76 FF 50 FE 46 8D 16 0A C4 83 00 64 40 D0 9A 01 -- 0492F0
8D 16 0A C4 83 00 64 40 D0 9A 01 FA 68 03 6A FC -- 049300
5E 5F C9 06 C4 83 00 34 EF B7 9A 00 6A 50 FE 46 -- 049310
7D 80 3D C5 89 5A 3E C5 2E 00 00 04 C8 57 56 CB -- 049320
C5 2E 00 34 83 86 9A 00 34 69 73 9A 05 75 00 03 -- 049330
36 FF 2E 2B C2 68 1F 75 00 01 3D 05 8B 8A 28 3E -- 049340
2C 36 FF 2E 8A 2E 36 FF 2E 8A 30 36 FF 2E 8A 32 -- 049350
6A 00 6A 00 6A 00 6A 0A C4 83 00 64 3A 84 9A 8A -- 049360
9A 8A 34 36 FF 2E 8A 36 36 FF 2E 00 6A 00 6A 00 -- 049370
13 74 00 FE 7E 83 FE 46 89 10 C4 83 00 5C A2 86 -- 049380
00 64 28 52 9A FE 76 FF 00 6A 00 6A 00 6A 00 6A -- 049390
36 FF 2E 00 64 22 FA 9A 00 54 C8 76 9A 0A C4 83 -- 0493A0
2B C2 68 00 6A 00 6A 00 6A 89 76 36 FF 2E 89 78 -- 0493B0
04 6A 0A 6A 04 6A 8A 30 36 FF 2E 8A 32 36 FF 2E -- 0493C0
83 00 5C A6 44 9A 8A 2C 36 FF 2E 8A 2E 36 FF 2E -- 0493D0
6A 00 6A 00 6A 00 6A 00 6A 00 64 23 34 9A 1A C4 -- 0493E0
A2 86 9A 8A 38 36 FF 2E 8A 3A 36 FF 2E 00 6A 00 -- 0493F0
2E 00 34 6A 53 9A FE 46 89 10 C4 83 00 5C 01 FE -- 049400
1A C8 57 56 CB 5E 5F C9 00 00 05 C7 89 52 3E C5 -- 049410
05 89 8A 3C 3E C5 2E 05 8B 89 3E 3E C5 2E 00 00 -- 049420
60 36 FF 2E 8A 40 36 FF 2E 8A 42 36 FF 2E 57 56 -- 049430
9A 50 22 05 6B 89 3E 3E C5 2E 89 5E 36 FF 2E 89 -- 049440
```

328

```
36 FF 2E 8A 46 36 FF 2E 57 56 5E 5F 00 5C FE EC -- 049450
9A 00 BA 68 8A 48 36 FF 2E 8A 4A 36 FF 2E 8A 44 -- 049460
02 45 8B 3D C5 89 36 3E C5 2E 5E 5F 00 5C FE EC -- 049470
C5 2E 05 8B 89 7E 3E C5 2E 05 89 8A 4C 3E C5 2E -- 049480
50 3E C5 2E 05 8B 8A 54 3E C5 2E 05 89 8A 30 3E -- 049490
89 8A 58 3E C5 2E 05 8B 8A 5C 3E C5 2E 05 89 8A -- 0494A0
12 6A 00 8B E9 03 75 00 3D 83 89 7E 3E C5 2E 05 -- 0494B0
FF 2E 8A 60 36 FF 2E 8A 62 36 FF 2E 01 6A 01 6A -- 0494C0
0C C4 83 00 5C 93 FD 9A 89 76 36 FF 2E 89 78 36 -- 0494D0
8B 0A C4 83 00 5C ED 6E 9A 50 EE 46 8D 16 50 52 -- 0494E0
00 01 E8 46 C7 EC 56 89 EA 46 89 F0 56 8B EE 46 -- 0494F0
FF 8A 64 36 FF 2E 8A 66 36 FF 2E 00 6A 00 FF 68 -- 049500
0E C4 83 00 64 43 5D 9A EA 76 FF EC 76 FF E8 76 -- 049510
68 36 FF 2E 8A 6A 36 FF 2E 15 74 C0 0B E6 46 89 -- 049520
EE 46 8D 16 00 AB E9 04 C4 83 00 5C 97 1E 9A 8A -- 049530
8A 6E 36 FF 2E 57 56 04 C4 83 00 5C 94 D5 9A 50 -- 049540
68 8A 70 36 FF 2E 8A 72 36 FF 2E 8A 6C 36 FF 2E -- 049550
8A 76 36 FF 2E 57 56 5E 5F 00 5C FE EC 9A 01 00 -- 049560
68 8A 78 36 FF 2E 8A 7A 36 FF 2E 8A 74 36 FF 2E -- 049570
8A 7E 36 FF 2E 57 56 5E 5F 00 5C FE EC 9A 01 00 -- 049580
6A 8A 60 36 FF 2E 8A 62 36 FF 2E 8A 7C 36 FF 2E -- 049590
2E 8A 82 36 FF 2E 57 56 5E 5F 00 5C FE EC 9A 12 -- 0495A0
66 6A 89 76 36 FF 2E 89 78 36 FF 2E 8A 80 36 FF -- 0495B0
FF 2E 8A 86 36 FF 2E 57 56 5E 5F 00 5C FE EC 9A -- 0495C0
00 8A 68 8A 88 36 FF 2E 8A 8A 36 FF 2E 8A 84 36 -- 0495D0
00 38 C8 57 56 CB 5E 5F C9 5E 5F 00 5C FE EC 9A -- 0495E0
9B 0A 7E C5 EC 5E D9 9B 10 45 D9 9B 0A 7E C5 00 -- 0495F0
9B 9A 50 D8 46 8D 16 E8 5E D9 9B 14 45 D9 01 FE -- 049600
00 34 ED BA 9A 50 C8 46 8D 16 04 C4 83 00 34 EE -- 049610
94 9A D8 5E D8 9B 10 45 D9 9B 0A 7E C5 04 C4 83 -- 049620
D9 9B 04 EB 10 45 D9 9B 0A 7E C5 09 76 00 5C ED -- 049630
10 45 D9 9B 0A 7E C5 10 5D D9 9B 0A 7E C5 D8 46 -- 049640
D9 9B 0A 7E C5 09 73 00 5C ED 94 9A DC 5E D8 9B -- 049650
C5 10 5D D9 9B 0A 7E C5 DC 46 D9 9B 04 EB 10 45 -- 049660
76 00 5C ED 94 9A E0 5E D8 9B 14 45 D9 9B 0A 7E -- 049670

7E C5 E0 46 D9 9B 04 EB 14 45 D9 9B 0A 7E C5 09 -- 049680
E4 5E D8 9B 14 45 D9 9B 0A 7E C5 14 5D D9 9B 0A -- 049690
04 EB 14 45 D9 9B 0A 7E C5 09 73 00 5C ED 94 9A -- 0496A0
D9 9B 0A 7E C5 14 5D D9 9B 0A 7E C5 E4 46 D9 9B -- 0496B0
0A 7E C5 15 75 00 5C ED 94 9A 10 5D D8 9B EC 46 -- 0496C0
E9 03 75 00 5C ED 94 9A 14 5D D8 9B E8 46 D9 9B -- 0496D0
0A 7E C5 F8 5E D9 9B 10 45 D9 9B 0A 7E C5 00 FB -- 0496E0
46 8D 16 50 F0 46 8D 16 FC 5E D9 9B 14 45 D9 9B -- 0496F0
2E 9B F0 46 D9 9B 08 C4 83 00 34 EF 50 9A 50 F8 -- 049700
C4 83 00 5C ED F9 9A 00 5C ED 99 9A 89 F0 06 DC -- 049710
89 F0 06 DC 2E 9B F4 46 D9 9B 05 89 0A 7E C5 08 -- 049720
0A 7E C5 08 C4 83 00 5C ED F9 9A 00 5C ED 99 9A -- 049730
00 5C ED 94 9A D8 5E D8 9B F8 46 D9 9B 02 45 89 -- 049740
00 5C ED F9 9A 00 5C ED 99 9A C8 46 D9 9B 18 75 -- 049750
D8 9B F8 46 D9 9B 25 EB 05 89 0A 7E C5 08 C4 83 -- 049760
ED 99 9A CC 46 D9 9B 16 75 00 5C ED 94 9A DC 5E -- 049770
9B 05 89 0A 7E C5 08 C4 83 00 5C ED F9 9A 00 5C -- 049780
D9 9B 19 75 00 5C ED 94 9A E0 5E D8 9B FC 46 D9 -- 049790
C5 08 C4 83 00 5C ED F9 9A 00 5C ED 99 9A D0 46 -- 0497A0
9A E4 5E D8 9B FC 46 D9 9B 26 EB 02 45 89 0A 7E -- 0497B0
9A 00 5C ED 99 9A D4 46 D9 9B 17 75 00 5C ED 94 -- 0497C0
5F C9 9B 02 45 89 0A 7E C5 08 C4 83 00 5C ED F9 -- 0497D0
0A 7E C5 8A 8C 36 C4 2E 00 00 0C C8 57 56 CB 5E -- 0497E0
2E 0F 73 00 5C ED 94 9A 1C D8 26 9B 10 45 D9 9B -- 0497F0
```

329

```
10 5D D9 9B 0A 7E C5 05 D9 9B 8A 8C 3E C5 01 FE -- 049800
1C D8 26 9B 14 45 D9 9B 0A 7E C5 8A 90 36 C4 2E -- 049810
C5 05 D9 9B 8A 90 3E C5 2E 0F 73 00 5C ED 94 9A -- 049820
8A 8C 3E C5 2E 89 2A 36 C4 2E 14 5D D9 9B 0A 7E -- 049830
C5 F4 5E DD 9B FC 56 D9 9B 04 D8 26 9B 05 D9 9B -- 049840
76 00 5C ED 94 9A F4 5E DC 9B 10 45 D9 9B 0A 7E -- 049850
32 36 C4 2E 10 5D D9 9B 0A 7E C5 FC 46 D9 9B 0B -- 049860
56 D9 9B 04 D8 26 9B 05 D9 9B 8A 90 3E C5 2E 89 -- 049870
F4 5E DC 9B 14 45 D9 9B 0A 7E C5 F4 5E DD 9B FC -- 049880
D9 9B 0A 7E C5 FC 46 D9 9B 0B 76 00 5C ED 94 9A -- 049890
5E 06 8B 2E EC 8B 55 57 56 CB 5E 5F C9 9B 14 5D -- 0498A0
02 55 89 05 89 89 5A 3E C5 2E 89 60 16 8B 2E 89 -- 0498B0
9B 3D C5 89 5A 3E C5 2E 05 D9 9B 89 62 3E C5 2E -- 0498C0
89 5A 3E C5 2E 05 D9 9B 89 66 3E C5 2E 1A 5D D9 -- 0498D0
C5 2E 05 D9 9B 89 6A 3E C5 2E 1E 5D D9 9B 3D C5 -- 0498E0
D9 9B 89 6E 3E C5 2E 12 5D D9 9B 3D C5 89 5A 3E -- 0498F0
54 29 A2 9A 16 5D D9 9B 3D C5 89 5A 3E C5 2E 05 -- 049900
E0 3E C5 2E 00 00 08 C8 57 56 CB 5E 5F C9 9B 00 -- 049910
2E 35 C4 89 5A 3E C5 2E F8 5E D9 9B 05 D9 9B 89 -- 049920
9B 1A 64 D8 26 9B 12 45 D9 9B 3D C5 89 5A 3E C5 -- 049930
07 73 00 5C ED 94 9A 8A 94 1E DC 2E 9B F8 4E D8 -- 049940
9B 05 D9 9B 89 E8 3E C5 2E 00 03 05 C7 0A 7E C5 -- 049950
C5 89 5A 3E C5 2E 35 C4 89 5A 3E C5 2E F8 5E D9 -- 049960
2E 9B F8 4E D8 9B 1E 64 D8 26 9B 16 45 D9 9B 3D -- 049970
05 C7 0A 7E C5 07 73 00 5C ED 94 9A 8A 94 1E DC -- 049980
00 6A 00 6A 13 75 00 03 3D 05 8B 0A 7E C5 00 03 -- 049990
9B 0A C4 83 00 64 28 52 9A 12 70 68 00 6A 00 6A -- 0499A0
00 24 AF FC 00 24 AF F4 00 3C 86 9A CB 5E 5F C9 -- 0499B0
00 3C 90 7E 00 24 B0 00 00 3C 90 7A 00 24 AF F8 -- 0499C0
00 3C 86 9C 00 24 AF E2 00 24 B0 04 00 3C 90 82 -- 0499D0
00 24 AB A8 00 24 B0 A6 00 3C 86 9E 00 24 B0 A8 -- 0499E0
00 24 AF E4 00 24 AB E6 00 24 B0 06 00 3C 2F A2 -- 0499F0
B0 0E 00 24 AF F0 00 24 AF E8 00 24 AF EC 01 FE -- 049A00
AB C2 00 3C 91 14 00 3C 86 F6 00 3C 86 A2 00 24 -- 049A10

AB D4 00 24 AB C3 00 24 AB B8 00 24 AB C5 00 24 -- 049A20
90 C9 00 24 AB D5 00 24 AB BE 00 24 AB D7 00 24 -- 049A30
AA 48 00 24 AA 42 00 24 B0 0A 00 3C 90 DB 00 3C -- 049A40
AA 74 00 24 AA 54 00 24 AB B0 00 24 AA 4E 00 24 -- 049A50
00 02 00 24 B0 1A 00 24 B0 16 00 24 AB AA 00 24 -- 049A60
00 3C 90 98 00 24 AB AE 00 24 B0 1E 00 24 AB AC -- 049A70
00 00 00 00 00 6C 28 DC 00 3C 90 9C 00 6C 28 D8 -- 049A80
00 24 AA A8 00 24 AA 94 00 24 B0 22 3F E0 00 00 -- 049A90
00 24 AA F2 00 24 AA E4 00 24 AA D0 00 24 AA BC -- 049AA0
00 24 AB 4A 00 24 AB 34 00 24 AB 1E 00 24 AB 08 -- 049AB0
00 24 B0 AA 00 24 AB 9E 00 3C 86 A0 00 24 AB 60 -- 049AC0
00 24 B2 C6 00 24 B0 AE 00 24 AB 7E 00 24 AB 76 -- 049AD0
00 24 B0 B0 00 24 B0 AC 00 6C 28 74 00 24 DB B2 -- 049AE0
00 3C 90 C6 00 3C B3 14 00 24 B1 B2 00 3C B3 16 -- 049AF0
00 3C B4 2A 00 24 B0 B2 00 24 AB 85 00 24 B6 C2 -- 049B00
00 24 DA C2 00 24 B2 B4 00 3C B3 2A 00 24 B1 B4 -- 049B10
00 3C 90 8C 00 3C 90 88 00 3C 90 36 00 24 DB 28 -- 049B20
1C 9A 00 00 3A C8 57 56 3F F0 00 00 00 00 00 00 -- 049B30
90 3E C5 2E 00 0A 05 C7 B2 8C 3E C5 2E 00 54 C8 -- 049B40
C5 2E 00 01 05 C7 B2 94 3E C5 2E 00 01 05 C7 B2 -- 049B50
01 3D 05 8B B2 9C 3E C5 2E 00 02 05 C7 B2 98 3E -- 049B60
03 6A 50 B2 A0 36 FF 2E B2 A2 36 FF 2E 21 7C 00 -- 049B70
B2 9C 3E C5 2E 0A C4 83 00 64 40 D0 9A 01 F6 68 -- 049B80
3E C5 2E 00 00 05 C7 B2 A4 3E C5 2E D3 EB 0D FF -- 049B90
05 C6 B2 AC 3E C5 2E 0A 75 00 03 3D 05 8B B2 A8 -- 049BA0
```

```
B2 A2 36 FF 2E 16 05 C6 B2 AC 3E C5 2E 08 EB 0B -- 049BB0
6A B2 AC 36 FF 2E B2 AE 36 FF 2E B2 A0 36 FF 2E -- 049BC0
3E C5 2E 0E C4 83 00 64 40 D0 9A 6E 6A 05 6A 01 -- 049BD0
C4 83 00 64 59 DC 9A 35 FF 13 74 00 3D 83 B2 A0 -- 049BE0
9B B2 B4 3E C5 2E 04 36 E9 0A 7E C5 00 03 B8 02 -- 049BF0
BC 36 C4 2E 1D D9 9B B2 B0 3E C5 2E 05 D9 01 FE -- 049C00
3E C5 2E 04 D8 26 9B 05 D9 9B B2 B4 3E C5 2E B2 -- 049C10
3E C5 2E 05 D9 9B B2 C4 3E C5 2E 1D D9 9B B2 B8 -- 049C20
9B B2 C4 3E C5 2E B2 CC 36 C4 2E 1D D9 9B B2 C0 -- 049C30
C5 2E 1D D9 9B B2 C8 3E C5 2E 04 D8 26 9B 05 D9 -- 049C40
00 3D 05 8B B2 D0 3E C5 2E 00 00 05 C7 B2 D0 3E -- 049C50
D6 1E 8E 2E B2 D4 3E 03 2E E7 D1 3D 8B 1B 74 01 -- 049C60
C5 2E D9 EB 05 FF B2 D0 3E C5 2E 00 01 05 C7 B2 -- 049C70
74 01 3D 80 B2 DC 3E C5 2E 00 00 05 C7 B2 D8 3E -- 049C80
34 8F 9B 9A 0A 76 FF 0C 76 FF 1E 75 02 3D 80 05 -- 049C90
03 B8 14 75 00 03 3D 05 8B 0A 7E C5 04 C4 83 00 -- 049CA0
83 00 34 93 5F 9A 0A 76 FF 0C 76 FF 03 7E E9 00 -- 049CB0
FF 2E 35 FF 02 75 FF B2 E4 3E C5 2E 01 6A 04 C4 -- 049CC0
0A C4 83 00 34 B1 E5 9A B2 E0 36 FF 2E B2 E2 36 -- 049CD0
74 00 3D 83 B2 E8 3E C5 2E FF 0C E9 03 74 C0 0B -- 049CE0
2E 00 01 05 C7 B2 E8 3E C5 2E 00 5C 61 05 9A 05 -- 049CF0
01 05 C7 B2 F0 3E C5 2E 00 01 05 C7 B2 EC 3E C5 -- 049D00
00 64 43 A9 9A 35 FF 02 75 FF B2 E4 3E C5 2E 00 -- 049D10
2E 00 44 5E 3A 9A 05 89 B2 D8 3E C5 2E 04 C4 83 -- 049D20
B2 F4 3E C5 2E 0B 7E 00 7D 3D 05 8B B2 D8 3E C5 -- 049D30
2E 00 00 05 C7 B2 F4 3E C5 2E 09 EB 00 01 05 C7 -- 049D40
00 00 05 C7 B2 D0 3E C5 2E 00 05 C6 B2 F8 3E C5 -- 049D50
D0 36 C4 2E 18 74 00 10 3D 05 8B B2 D0 3E C5 2E -- 049D60
B2 D0 3E C5 2E 05 88 3C 03 26 B2 FC 3E C5 2E B2 -- 049D70
FF 2E B2 A0 36 FF 2E B2 A2 36 FF 2E DC EB 05 FF -- 049D80
36 FF 2E B2 FA 36 FF 2E B2 FC 36 FF 2E B2 FE 36 -- 049D90
9A 01 43 68 0A 6A 00 6A 02 6A 01 6A 10 6A B2 F8 -- 049DA0
A0 36 FF 2E B2 A2 36 FF 2E 18 C4 83 00 64 40 D0 -- 049DB0

2E 0A C4 83 00 64 40 D0 9A 6F 6A 03 6A 16 6A B2 -- 049DC0
C4 83 00 5C 60 DD 9A 35 FF 02 75 FF B2 E4 3E C5 -- 049DD0
00 5C 94 D5 9A B3 00 36 FF 2E B3 02 36 FF 2E 04 -- 049DE0
DB 64 9A 07 74 00 3D 83 B3 04 3E C5 2E 04 C4 83 -- 049DF0
00 03 3D 05 8B B2 A8 3E C5 2E 11 EB 00 14 01 FE -- 049E00
03 3D 05 8B B2 A8 3E C5 2E 00 14 F1 5A 9A 05 74 -- 049E10
83 00 14 55 74 9A 00 6A 00 44 5A FD 9A 11 75 00 -- 049E20
01 B8 B3 08 36 C4 2E 00 4C 02 61 9A 05 EB 02 C4 -- 049E30
00 44 60 DD 9A 05 89 B3 08 3E C5 2E 04 2B 26 00 -- 049E40
0A 76 FF 0C 76 FF 10 75 02 3D 80 B2 DC 3E C5 2E -- 049E50
01 05 C7 0A 7E C5 07 EB 04 C4 83 00 34 94 99 9A -- 049E60
9A 05 74 C0 0B 00 34 B1 2D 9A 00 54 C8 1C 9A 00 -- 049E70
2E 02 C4 83 00 64 4E 56 9A 00 BA 68 00 44 5F EB -- 049E80
12 6A 00 34 B0 C3 9A 02 55 89 05 89 B3 0C 3E C5 -- 049E90
2E B3 12 36 FF 2E B3 14 36 FF 2E B3 16 36 FF 2E -- 049EA0
FF 2E 12 6A 0A C4 83 00 5C ED 6E 9A B3 10 36 FF -- 049EB0
36 FF 2E B3 1A 36 FF 2E B3 14 36 FF 2E B3 16 36 -- 049EC0
2E B3 22 36 FF 2E 0A C4 83 00 5C ED 6E 9A B3 18 -- 049ED0
60 9A B3 1C 36 FF 2E B3 1E 36 FF 2E B3 20 36 FF -- 049EE0
E4 2A 01 45 8A B3 28 3E C5 2E 08 C4 83 00 64 5A -- 049EF0
E4 2A 05 8A B3 28 3E C5 2E 05 88 B3 24 3E C5 2E -- 049F00
30 36 FF 2E B3 32 36 FF 2E 05 88 B3 10 3E C5 2E -- 049F10
00 64 5A 60 9A B3 2C 36 FF 2E B3 2E 36 FF 2E B3 -- 049F20
3E C5 2E E4 2A 01 45 8A B3 28 3E C5 2E 08 C4 83 -- 049F30
3E C5 2E E4 2A 05 8A B3 28 3E C5 2E 05 88 B3 34 -- 049F40
2E B3 12 36 FF 2E 01 6A FF 6A 12 6A 05 88 B3 18 -- 049F50
```

331

```
FD  9A  B3  28  36  FF  2E  B3  2A  36  FF  2E  B3  10  36  FF  --  049F60
ED  6E  9A  50  EE  46  8D  16  50  52  0C  C4  83  00  5C  93  --  049F70
6A  FF  6A  12  6A  3D  74  00  FC  7E  83  0A  C4  83  00  5C  --  049F80
B3  2A  36  FF  2E  B3  18  36  FF  2E  B3  1A  36  FF  2E  01  --  049F90
16  50  52  0C  C4  83  00  5C  93  FD  9A  B3  28  36  FF  2E  --  049FA0
00  EA  7E  83  0A  C4  83  00  5C  ED  6E  9A  50  DC  46  8D  --  049FB0
94  D5  9A  50  EE  46  8D  16  04  EB  DC  46  8D  16  41  75  --  049FC0
1C  36  FF  2E  B3  1E  36  FF  2E  57  56  04  C4  83  00  5C  --  049FD0
FF  2E  57  56  5E  5F  00  8C  00  02  9A  0A  6A  00  6A  B3  --  049FE0
8C  00  02  9A  0A  6A  00  6A  B3  2C  36  FF  2E  B3  2E  36  --  049FF0
3A  36  FF  2E  57  56  00  64  04  5E  9A  5E  5F  00  01  FE  --  04A000
B2  D4  36  FF  2E  B2  D6  36  FF  2E  B3  38  36  FF  2E  B3  --  04A010
8B  B2  D8  3E  C5  2E  5E  5F  00  5C  FF  6A  9A  01  00  68  --  04A020
C8  57  56  CB  5E  5F  C9  9B  05  89  B3  3C  3E  C5  2E  05  --  04A030
02  4E  68  00  6A  50  FC  CC  86  8D  16  57  56  00  04  44  --  04A040
55  8B  05  8B  B3  40  3E  C5  2E  5E  5F  00  8C  00  02  9A  --  04A050
16  00  00  FC  C8  86  C7  FC  D2  96  89  FC  D0  86  89  02  --  04A060
9A  FC  C8  B6  FF  50  FC  CC  86  8D  16  50  FC  A4  86  8D  --  04A070
3D  83  05  89  B2  A0  3E  C5  2E  0A  C4  83  00  5C  48  F8  --  04A080
46  8D  16  00  01  FF  64  86  C7  03  55  E9  50  04  74  00  --  04A090
20  9A  50  FC  CC  86  8D  16  50  FF  64  86  8D  16  50  AA  --  04A0A0
00  3D  83  05  89  B2  A0  3E  C5  2E  0C  C4  83  00  5C  4D  --  04A0B0
4E  56  9A  50  07  C7  6B  F8  8B  E4  2A  A9  46  8A  D1  75  --  04A0C0
A7  46  8A  FF  1E  96  89  FF  1C  86  89  02  C4  83  00  64  --  04A0D0
02  C4  83  00  64  4E  56  9A  50  28  C7  6B  F8  8B  E4  2A  --  04A0E0
FF  1E  B6  FF  00  6A  00  6A  FB  CE  96  89  FB  CC  86  89  --  04A0F0
CC  86  8D  16  50  FC  CB  86  8D  16  50  52  FF  1C  B6  FF  --  04A100
89  B2  A0  3E  C5  2E  14  C4  83  00  5C  4E  3D  9A  50  FC  --  04A110
05  C7  B2  D0  3E  C5  2E  FF  6A  E9  03  74  00  3D  83  05  --  04A120
2E  74  05  3B  E4  2A  A9  46  8A  B2  D0  3E  C5  2E  00  00  --  04A130
8E  FF  1C  BE  03  F8  8B  07  04  6B  26  B2  D0  36  C4  2E  --  04A140
D6  1E  8E  2E  B2  D4  3E  03  2E  E7  D1  3D  8B  FF  1E  9E  --  04A150

C5  2E  C4  EB  05  FF  B2  D0  3E  C5  2E  00  02  05  C7  B2  --  04A160
D0  3E  C5  2E  00  FB  D3  86  C6  00  00  05  C7  B2  D0  3E  --  04A170
D3  BE  80  00  AC  E9  03  75  05  3B  E4  2A  A9  46  8A  B2  --  04A180
FF  1C  BE  03  F8  8B  07  05  6B  00  A2  E9  03  74  00  FB  --  04A190
FF  20  86  8D  16  FF  1A  86  89  04  45  8B  FF  1E  9E  8E  --  04A1A0
00  5C  4D  59  9A  50  FC  CC  86  8D  16  FF  1A  B6  FF  50  --  04A1B0
E9  03  74  00  3D  83  05  89  B2  A0  3E  C5  2E  0A  C4  83  --  04A1C0
2E  B3  46  36  FF  2E  50  FF  3E  86  8D  16  68  6A  FE  C1  --  04A1D0
8D  16  50  52  08  C4  83  00  5C  91  A4  9A  B3  44  36  FF  --  04A1E0
FC  A2  BE  83  0A  C4  83  00  5C  ED  6E  9A  50  FC  3C  86  --  04A1F0
93  86  8D  16  01  E2  E9  FC  A2  B6  FF  07  74  00  01  FE  --  04A200
50  00  03  05  B3  14  06  8B  2E  B3  16  36  FF  2E  50  FC  --  04A210
FB  D3  86  C6  05  75  C0  0B  08  C4  83  00  64  5A  20  9A  --  04A220
B2  DC  3E  C5  2E  FF  43  E9  05  FF  B2  D0  3E  C5  2E  01  --  04A230
E9  03  75  00  FB  D3  BE  80  01  8C  E9  03  74  02  3D  80  --  04A240
9B  FF  5A  86  D9  9B  FB  C4  9E  DD  9B  E8  D9  9B  01  82  --  04A250
DD  9B  E8  D9  9B  19  75  00  5C  ED  94  9A  FB  C4  9E  DC  --  04A260
ED  94  9A  FB  BC  9E  DC  9B  FF  5E  86  D9  9B  FB  BC  9E  --  04A270
9E  DD  9B  EE  D9  9B  01  64  E9  12  77  68  06  74  00  5C  --  04A280
83  00  64  49  4E  9A  FF  26  B6  FF  FF  28  B6  FF  FB  C4  --  04A290
78  68  06  74  00  5C  ED  94  9A  FB  C4  9E  DC  9B  04  C4  --  04A2A0
D9  9B  B3  48  3E  C5  2E  FF  52  86  D9  9B  01  3A  E9  12  --  04A2B0
8D  16  1D  D9  9B  B3  4C  3E  C5  2E  FF  56  86  D9  9B  1D  --  04A2C0
42  36  FF  2E  04  C4  83  00  5C  49  0B  9A  50  FC  CC  86  --  04A2D0
86  89  04  C4  83  00  5C  94  D5  9A  B3  40  36  FF  2E  B3  --  04A2E0
83  00  64  4E  E3  9A  FF  1C  B6  FF  FF  1E  B6  FF  FB  D0  --  04A2F0
FF  2E  B3  46  36  FF  2E  50  82  46  8D  16  68  6A  04  C4  --  04A300
```

332

```
86  8D  16  50  52  08  C4  83  00  5C  91  A4  9A  B3  44  36  --  04A310
86  8D  16  12  6A  0A  C4  83  00  5C  ED  6E  9A  50  FB  D4  --  04A320
ED  6E  9A  B3  50  36  FF  2E  B3  52  36  FF  2E  50  FC  28  --  04A330
36  FF  2E  50  FB  D4  86  8D  16  66  6A  0A  C4  83  00  5C  --  04A340
6A  0A  C4  83  00  5C  ED  6E  9A  B3  54  36  FF  2E  B3  56  --  04A350
2E  B3  46  36  FF  2E  50  82  46  8D  16  01  6A  01  6A  12  --  04A360
FF  2E  50  52  0C  C4  83  00  5C  94  45  9A  B3  44  36  FF  --  04A370
0A  C4  83  00  5C  ED  6E  9A  B3  00  36  FF  2E  B3  02  36  --  04A380
DC  3E  C5  2E  14  75  10  53  3D  05  8B  B3  58  3E  C5  2E  --  04A390
3E  EB  12  81  68  43  EB  12  80  68  05  75  01  3D  80  B2  --  04A3A0
C5  2E  30  EB  35  FF  04  74  00  3D  83  B3  58  3E  C5  2E  --  04A3B0
89  05  89  B2  E4  3E  C5  2E  02  55  8B  05  8B  B3  00  3E  --  04A3C0
ED  E9  03  74  02  3D  80  B2  DC  3E  C5  2E  2A  EB  02  55  --  04A3D0
DC  9A  12  4B  68  FE  E3  E9  03  74  00  FB  D3  BE  80  FE  --  04A3E0
C9  9B  05  89  0A  7E  C5  00  03  B8  02  C4  83  00  64  59  --  04A3F0
36  FF  2E  66  6A  00  00  04  C8  57  56  CB  5E  5F  01  FE  --  04A400
54  36  FF  2E  B3  56  36  FF  2E  B3  5C  36  FF  2E  B3  5E  --  04A410
2E  01  6A  01  6A  12  6A  0A  C4  83  00  5C  ED  6E  9A  B3  --  04A420
FF  2E  B3  5E  36  FF  2E  B3  60  36  FF  2E  B3  62  36  FF  --  04A430
36  FF  2E  50  52  0C  C4  83  00  5C  93  FD  9A  B3  5C  36  --  04A440
2E  0A  C4  83  00  5C  ED  6E  9A  B3  00  36  FF  2E  B3  02  --  04A450
00  64  59  DC  9A  35  FF  15  74  00  3D  83  B3  58  3E  C5  --  04A460
C5  2E  00  BD  E9  05  89  0A  7E  C5  00  03  B8  02  C4  83  --  04A470
89  05  89  B2  E4  3E  C5  2E  02  55  8B  05  8B  B3  00  3E  --  04A480
89  04  C4  83  00  64  4E  A1  9A  01  00  68  24  6A  02  55  --  04A490
9A  35  FF  02  75  FF  B2  E4  3E  C5  2E  FE  56  89  FC  46  --  04A4A0
FF  68  05  89  B2  D8  3E  C5  2E  04  C4  83  00  64  43  A9  --  04A4B0
B2  E4  3E  C5  2E  01  6A  FC  76  FF  FE  76  FF  00  6A  00  --  04A4C0
3E  C5  2E  0E  C4  83  00  64  43  5D  9A  35  FF  02  75  FF  --  04A4D0
B2  D0  3E  C5  2E  B2  D8  36  C4  2E  00  01  05  C7  B2  D0  --  04A4E0
24  04  6B  26  B2  D0  36  C4  2E  36  7F  04  3B  26  05  8B  --  04A4F0

3E  C5  2E  17  75  02  3D  80  FE  5E  8E  FC  7E  03  F8  8B  --  04A500
B2  D6  1E  8E  2E  B2  D4  3E  03  2E  E7  D1  3D  8B  B2  D0  --  04A510
FE  76  FF  B9  EB  05  FF  B2  D0  3E  C5  2E  00  02  05  C7  --  04A520
56  CB  5E  5F  C9  04  C4  83  00  64  4E  E3  9A  FC  76  FF  --  04A530
9B  EE  D9  9B  00  02  05  C7  0A  7E  C5  00  00  08  C8  57  --  04A540
9A  F8  5E  DC  9B  05  D9  9B  B3  48  3E  C5  2E  F8  5E  DD  --  04A550
D9  9B  05  D9  9B  B3  48  3E  C5  2E  2D  73  00  5C  ED  94  --  04A560
D9  9B  B3  6C  3E  C5  2E  1D  D9  9B  B3  64  3E  C5  2E  E0  --  04A570
48  3E  C5  2E  EE  D9  9B  1D  D9  9B  B3  68  3E  C5  2E  05  --  04A580
C4  2E  1D  D9  9B  B3  64  3E  C5  2E  EE  D9  9B  21  EB  B3  --  04A590
2E  24  D8  26  9B  05  D9  9B  B3  6C  3E  C5  2E  B3  48  36  --  04A5A0
C5  2E  F8  5E  DD  9B  EE  D9  9B  1D  D9  9B  B3  68  3E  C5  --  04A5B0
73  00  5C  ED  94  9A  F8  5E  DC  9B  05  D9  9B  B3  4C  3E  --  04A5C0
70  3E  C5  2E  E0  D9  9B  05  D9  9B  B3  4C  3E  C5  2E  2D  --  04A5D0
74  3E  C5  2E  05  D9  9B  B3  78  3E  C5  2E  1D  D9  9B  B3  --  04A5E0
D9  9B  21  EB  B3  4C  3E  C5  2E  EE  D9  9B  1D  D9  9B  B3  --  04A5F0
B3  4C  36  C4  2E  1D  D9  9B  B3  70  3E  C5  2E  EE  01  FE  --  04A600
74  3E  C5  2E  24  D8  26  9B  05  D9  9B  B3  78  3E  C5  2E  --  04A610
5C  ED  99  9A  05  D9  9B  B3  70  3E  C5  2E  1D  D9  9B  B3  --  04A620
C5  2E  00  5C  ED  99  9A  05  D9  9B  B3  64  3E  C5  2E  00  --  04A630
B3  68  3E  C5  2E  00  5C  ED  99  9A  05  D9  9B  B3  74  3E  --  04A640
05  D9  9B  B3  4C  3E  C5  2E  00  5C  ED  99  9A  05  D9  9B  --  04A650
ED  99  9A  05  D9  9B  B3  48  3E  C5  2E  00  5C  ED  99  9A  --  04A660
56  CB  5E  5F  C9  9B  30  C4  83  00  34  95  D7  9A  00  5C  --  04A670
1D  D9  9B  B3  7C  3E  C5  2E  0A  46  DD  9B  EC  8B  55  57  --  04A680
1A  46  DD  9B  1D  D9  9B  B3  80  3E  C5  2E  12  46  DD  9B  --  04A690
88  3E  C5  2E  22  46  DD  9B  1D  D9  9B  B3  84  3E  C5  2E  --  04A6A0
1D  D9  9B  B3  8C  3E  C5  2E  1A  46  DD  9B  1D  D9  9B  B3  --  04A6B0
```

```
2A 46 DD 9B 1D D9 9B B3 90 3E C5 2E 22 46 DD 9B -- 04A6C0
98 3E C5 2E 32 46 DD 9B 1D D9 9B B3 94 3E C5 2E -- 04A6D0
C7 00 00 02 C8 57 56 CB 5E 5F C9 9B 1D D9 9B B3 -- 04A6E0
3E C5 2E 00 00 05 C7 B3 9C 3E C5 2E 00 00 FE 46 -- 04A6F0
36 FF 2E 12 6A 05 89 B3 A0 3E C5 2E 05 8B B2 E8 -- 04A700
A4 36 FF 2E B3 A6 36 FF 2E B3 50 36 FF 2E B3 52 -- 04A710
B3 AE 36 FF 2E 12 6A 0A C4 83 00 5C ED 6E 9A B3 -- 04A720
9A B3 A8 36 FF 2E B3 AA 36 FF 2E B3 AC 36 FF 2E -- 04A730
64 11 62 9A 00 44 57 40 9A 0A C4 83 00 5C ED 6E -- 04A740
57 56 04 C4 83 00 64 13 49 9A 50 FE 46 8D 16 00 -- 04A750
02 9A 0A 6A 00 6A B3 B0 36 FF 2E B3 B2 36 FF 2E -- 04A760
B4 36 FF 2E B3 B6 36 FF 2E 57 56 5E 5F 00 8C 00 -- 04A770
B6 36 FF 2E 5E 5F 00 8C 00 02 9A 0A 6A 00 6A B3 -- 04A780
06 C4 83 00 5C D0 03 9A 0A 6A B3 B4 36 FF 2E B3 -- 04A790
02 C4 83 00 64 59 DC 9A 12 60 68 0E 75 FF FF 3D -- 04A7A0
01 EC E9 03 75 00 3D 80 B3 B4 3E C5 2E 01 EC E9 -- 04A7B0
C0 0B 04 C4 83 00 5C D3 8B 9A 57 B3 B6 36 FF 2E -- 04A7C0
03 74 C0 0B FE 46 89 C0 2B 02 EB 00 01 B8 05 74 -- 04A7D0
5B 18 9A B3 B4 36 FF 2E B3 B6 36 FF 2E C5 EB 50 -- 04A7E0
28 36 FF 2E B3 2A 36 FF 2E 66 6A 04 C4 83 00 64 -- 04A7F0
ED 6E 9A B3 5C 36 FF 2E B3 5E 36 FF 2E B3 01 FE -- 04A800
2E B3 B4 36 FF 2E B3 B6 36 FF 2E 0A C4 83 00 5C -- 04A810
5B B4 9A 50 00 03 05 B3 60 06 8B 2E B3 62 36 FF -- 04A820
B3 62 36 FF 2E 02 6A FF 6A 12 6A 08 C4 83 00 64 -- 04A830
9A B3 5C 36 FF 2E B3 5E 36 FF 2E B3 60 36 FF 2E -- 04A840
FF 2E B3 42 36 FF 2E 50 52 0C C4 83 00 5C 93 FD -- 04A850
B3 B8 3E C5 2E 0A C4 83 00 5C ED 6E 9A B3 40 36 -- 04A860
9A 35 FF 03 6A 00 6A 00 6A 00 6A 15 74 00 3D 83 -- 04A870
8B B3 BC 3E C5 2E 01 17 E9 0A C4 83 00 64 28 52 -- 04A880
74 F9 E0 07 3B 2E 43 43 00 03 B9 97 FC BB 08 45 -- 04A890

98 55 00 15 00 14 00 01 06 67 FF 2E 00 EB E9 03 -- 04A8A0
83 00 34 8A 9C 9A 0A 76 FF 0C 76 FF 98 DB 98 AF -- 04A8B0
9A 00 D2 E9 03 75 00 03 3D 05 8B 0A 7E C5 04 C4 -- 04A8C0
3D 80 B2 DC 3E C5 2E 00 64 13 8B 9A 00 64 04 5E -- 04A8D0
04 C4 83 00 64 14 11 9A 50 FE 46 8D 16 10 75 02 -- 04A8E0
2E EE EB 00 64 13 E7 9A 50 FE 46 8D 16 00 C3 E9 -- 04A8F0
B4 36 FF 2E B3 B6 36 FF 2E 00 05 C6 B2 DC 3E C5 -- 04A900
00 64 5B B4 9A B3 B0 36 FF 2E B3 B2 36 FF 2E B3 -- 04A910
3E C5 2E E4 2A 01 45 8A B3 28 3E C5 2E 08 C4 83 -- 04A920
3E C5 2E E4 2A 05 8A B3 28 3E C5 2E 05 88 B3 C0 -- 04A930
D5 9A B3 40 36 FF 2E B3 42 36 FF 2E 05 88 B3 50 -- 04A940
05 C6 B2 DC 3E C5 2E FF 5B E9 04 C4 83 00 5C 94 -- 04A950
B3 C4 3E C5 2E E4 2A 01 45 8A B3 28 3E C5 2E 01 -- 04A960
B3 AC 3E C5 2E E4 2A 05 8A B3 28 3E C5 2E 05 88 -- 04A970
2E D2 EB 02 05 C6 B2 DC 3E C5 2E FF 2F E9 05 88 -- 04A980
C4 83 00 5C 94 D5 9A B3 40 36 FF 2E B3 42 36 FF -- 04A990
03 B8 04 C4 83 00 64 13 07 9A 50 FE 46 8D 16 04 -- 04A9A0
2E EC 8B 55 57 56 CB 5E 5F C9 05 89 0A 7E C5 00 -- 04A9B0
9A 0A 76 FF 0C 76 FF 08 6A 02 05 C6 B2 DC 3E C5 -- 04A9C0
EC 8B 55 57 56 CB 5E 5F C9 06 C4 83 00 34 99 73 -- 04A9D0
0A 76 FF 0C 76 FF 14 6A 01 05 C6 B2 DC 3E C5 2E -- 04A9E0
8B 55 57 56 CB 5E 5F C9 06 C4 83 00 34 99 73 9A -- 04A9F0
0C 76 FF 05 6A 00 05 C6 B2 DC 3E C5 2E EC 01 FE -- 04AA00
56 CB 5E 5F C9 06 C4 83 00 34 99 73 9A 0A 76 FF -- 04AA10
A0 3E C5 2E 05 8B B2 E8 3E C5 2E 00 07 C2 C8 57 -- 04AA20
2E B3 50 36 FF 2E B3 52 36 FF 2E 12 6A 05 89 B3 -- 04AA30
C4 83 00 5C ED 6E 9A B3 A4 36 FF 2E B3 A6 36 FF -- 04AA40
36 FF 2E B3 AC 36 FF 2E B3 AE 36 FF 2E 12 6A 0A -- 04AA50
9A 0A C4 83 00 5C ED 6E 9A B3 A8 36 FF 2E B3 AA -- 04AA60
```

334

```
9A 50 F8 3E 86 8D 16 00 64 11 62 9A 00 44 57 40 -- 04AA70
BA 68 00 02 05 C7 0A 7E C5 04 C4 83 00 64 13 49 -- 04AA80
F8 46 86 8D 16 B3 C8 36 FF 2E B3 CA 36 FF 2E 07 -- 04AA90
44 86 89 F8 46 86 8B 0A C4 83 00 5C ED 6E 9A 50 -- 04AAA0
86 89 05 71 2D D2 8C C5 03 03 DC F8 44 86 69 F8 -- 04AAB0
44 86 69 00 05 C6 F8 40 BE C5 F8 42 96 89 F8 40 -- 04AAC0
FC 22 85 89 0E 46 8B 1F 16 FD 03 F8 8B 03 DC F8 -- 04AAD0
2E 00 6A 0A 6A 04 6A 50 F8 46 86 8D 16 07 BA 68 -- 04AAE0
C4 83 00 5C A5 FF 9A B3 CC 36 FF 2E B3 CE 36 FF -- 04AAF0
00 3D 80 F8 40 BE C5 F8 44 86 89 F8 46 86 8B 10 -- 04AB00
B4 36 FF 2E B3 B6 36 FF 2E 57 56 02 07 E9 03 75 -- 04AB10
9A 5E 5F 00 5C FE EC 9A 0F 6A 57 F8 42 B6 FF B3 -- 04AB20
B3 28 36 FF 2E B3 2A 36 FF 2E 66 6A 00 1C FB 2F -- 04AB30
83 00 5C ED 6E 9A B3 5C 36 FF 2E B3 5E 36 FF 2E -- 04AB40
62 36 FF 2E B3 B4 36 FF 2E B3 B6 36 FF 2E 0A C4 -- 04AB50
83 00 64 5B B4 9A 50 00 03 05 B3 60 06 8B 2E B3 -- 04AB60
36 FF 2E B3 62 36 FF 2E 02 6A FF 6A 12 6A 08 C4 -- 04AB70
5C 93 FD 9A B3 5C 36 FF 2E B3 5E 36 FF 2E B3 60 -- 04AB80
B3 40 36 FF 2E B3 42 36 FF 2E 50 52 0C C4 83 00 -- 04AB90
00 3D 83 B3 B8 3E C5 2E 0A C4 83 00 5C ED 6E 9A -- 04ABA0
64 28 52 9A 35 FF 03 6A 00 6A 00 6A 00 6A 15 74 -- 04ABB0
2A 01 45 8A B3 28 3E C5 2E 01 55 E9 0A C4 83 00 -- 04ABC0
2A 05 8A B3 28 3E C5 2E 05 88 B3 C4 3E C5 2E E4 -- 04ABD0
36 FF 2E B3 B6 36 FF 2E 05 88 B3 AC 3E C5 2E E4 -- 04ABE0
88 B3 D0 3E C5 2E 04 C4 83 00 64 5C 0E 9A B3 B4 -- 04ABF0
76 00 02 3D E4 2A 05 8A B2 DC 3E C5 2E 05 01 FE -- 04AC00
75 9B E7 9B 6F A7 FF 2E D8 8B E0 D1 00 F8 E9 03 -- 04AC10
C7 B3 9C 3E C5 2E 00 01 05 C7 0A 7E C5 9C 39 9B -- 04AC20
C4 83 00 34 8A 9C 9A 0A 76 FF 0C 76 FF 00 00 05 -- 04AC30

16 00 02 05 C7 15 75 00 03 3D 05 8B 0A 7E C5 04 -- 04AC40
00 D4 E9 04 C4 83 00 64 13 07 9A 50 F8 3E 86 8D -- 04AC50
64 13 8B 9A 00 64 04 5E 9A 00 01 05 C7 0A 7E C5 -- 04AC60
F8 3E 86 8D 16 0D 75 02 3D 80 B2 DC 3E C5 2E 00 -- 04AC70
E7 9A 50 F8 3E 86 8D 16 D2 EB 00 64 14 11 9A 50 -- 04AC80
2E B3 B4 36 FF 2E B3 B6 36 FF 2E C5 EB 00 64 13 -- 04AC90
C4 83 00 64 5B B4 9A B3 B0 36 FF 2E B3 B2 36 FF -- 04ACA0
B3 C0 3E C5 2E E4 2A 01 45 8A B3 28 3E C5 2E 08 -- 04ACB0
B3 50 3E C5 2E E4 2A 05 8A B3 28 3E C5 2E 05 88 -- 04ACC0
5C 94 D5 9A B3 40 36 FF 2E B3 42 36 FF 2E 05 88 -- 04ACD0
2E 02 05 C6 B2 DC 3E C5 2E FF 3C E9 04 C4 83 00 -- 04ACE0
68 FF 24 E9 03 75 00 15 3D 08 45 8B B3 BC 3E C5 -- 04ACF0
42 36 FF 2E 12 EB 02 C4 83 00 64 59 DC 9A 12 4D -- 04AD00
8D 16 04 C4 83 00 5C 94 D5 9A B3 40 36 FF 2E B3 -- 04AD10
C5 00 02 B8 04 C4 83 00 64 13 07 9A 50 F8 3E 86 -- 04AD20
D9 9B 00 00 62 C8 57 56 CB 5E 5F C9 05 89 0A 7E -- 04AD30
79 9A 50 D8 46 8D 16 E8 5E D9 9B EC 56 D9 9B EE -- 04AD40
9B B3 D4 3E C5 2E E8 46 D9 9B 04 C4 83 00 5C E0 -- 04AD50
2E B3 DA 36 FF 2E 04 5D D9 9B EC 46 D9 9B 1D D9 -- 04AD60
00 DC 7E 83 04 C4 83 00 34 EE 9B 9A B3 D8 36 FF -- 04AD70
5E D9 9B 05 D9 9B B3 D4 3E C5 2E 01 64 E9 03 7D -- 04AD80
45 D9 9B 3D C5 B3 0C 3E C5 2E B3 D8 36 C4 2E C6 -- 04AD90
0C 3E C5 2E 0D 76 00 5C ED 94 9A 1C D8 26 9B 6C -- 04ADA0
D9 9B B3 D8 3E C5 2E 08 EB 6C 45 D9 9B 3D C5 B3 -- 04ADB0
2E 01 04 E9 03 72 00 5C ED 94 9A C6 5E D8 9B 05 -- 04ADC0
B3 DC 3E C5 2E B6 5E D9 9B 05 D9 9B B3 D4 3E C5 -- 04ADD0
3D C5 35 C4 B3 0C 3E C5 2E BE 5E D9 9B 05 D9 9B -- 04ADE0
ED 94 9A BE 5E D8 9B 6C 44 D8 26 9B 74 45 D9 9B -- 04ADF0
9B 3D C5 35 C4 B3 0C 3E C5 2E 14 73 00 5C 01 FE -- 04AE00
9B B3 DC 3E C5 2E 08 EB 6C 44 D8 26 9B 74 45 D9 -- 04AE10
```

335

```
00 A5 E9 03 77 00 5C ED 94 9A B6 5E D8 9B 05 D9 -- 04AE20
36 C4 2E AE 5E D9 9B 04 45 D9 9B B3 D4 3E C5 2E -- 04AE30
D8 26 9B 70 45 D9 9B 3D C5 B3 0C 3E C5 2E B3 E0 -- 04AE40
9B 3D C5 B3 0C 3E C5 2E 0D 76 00 5C ED 94 9A 1C -- 04AE50
5E D8 9B 05 D9 9B B3 E0 3E C5 2E 08 EB 70 45 D9 -- 04AE60
45 D9 9B B3 D4 3E C5 2E 5D 73 00 5C ED 94 9A AE -- 04AE70
5E D9 9B 05 D9 9B B3 E4 3E C5 2E 9E 5E D9 9B 04 -- 04AE80
26 9B 78 45 D9 9B 3D C5 35 C4 B3 0C 3E C5 2E A6 -- 04AE90
C5 2E 14 73 00 5C ED 94 9A A6 5E D8 9B 70 44 D8 -- 04AEA0
70 44 D8 26 9B 78 45 D9 9B 3D C5 35 C4 B3 0C 3E -- 04AEB0
94 9A 9E 5E D8 9B 05 D9 9B B3 E4 3E C5 2E 08 EB -- 04AEC0
02 C4 83 00 64 59 DC 9A 12 83 68 16 77 00 5C ED -- 04AED0
50 D6 46 8D 16 02 3D E9 05 89 0A 7E C5 00 02 B8 -- 04AEE0
3E C5 2E 00 34 A4 19 9A 04 C4 83 00 64 14 11 9A -- 04AEF0
5E D9 9B 04 45 D9 9B CE 5E D9 9B 05 D9 9B B3 E8 -- 04AF00
64 40 D0 9A 6F 6A 03 6A 16 6A 50 D6 46 8D 16 D2 -- 04AF10
2D 9A 00 54 C8 1C 9A 00 44 57 40 9A 0A C4 83 00 -- 04AF20
34 B0 C3 9A 00 44 5F EB 9A 05 74 C0 0B 00 34 B1 -- 04AF30
C4 B3 0C 3E C5 2E 01 26 E9 03 7C 00 DC 7E 83 00 -- 04AF40
9A 00 B6 9C D8 26 9B 05 D9 9B B3 D4 3E C5 2E 35 -- 04AF50
3E C5 2E C6 5E DD 9B EE D9 9B 52 77 00 5C ED 94 -- 04AF60
38 72 00 5C ED 94 9A C6 5E DC 9B 05 D9 9B B3 D4 -- 04AF70
04 45 D9 9B B3 D4 3E C5 2E 35 C4 B3 0C 3E C5 2E -- 04AF80
EE D9 9B 1B 77 00 5C ED 94 9A 00 B2 9C D8 26 9B -- 04AF90
5E DC 9B 04 45 D9 9B B3 D4 3E C5 2E BE 5E DD 9B -- 04AFA0
00 64 59 DC 9A 12 4A 68 1B 73 00 5C ED 94 9A BE -- 04AFB0
04 C4 83 00 64 13 07 9A 50 D6 46 8D 16 02 C4 83 -- 04AFC0
5E DD 9B EE D9 9B 00 01 05 C7 0A 7E C5 FF 0D E9 -- 04AFD0

C6 5E DC 9B 6C 45 D9 9B 3D C5 B3 0C 3E C5 2E C6 -- 04AFE0
D9 9B 3D C5 B3 0C 3E C5 2E 15 76 00 5C ED 94 9A -- 04AFF0
C5 2E 13 EB 05 D8 9B B3 D4 3E C5 2E 6C 45 01 FE -- 04B000
D8 9B B3 D4 3E C5 2E 54 45 D9 9B 3D C5 B3 0C 3E -- 04B010
B3 0C 3E C5 2E C6 5E DD 9B EE D9 9B 1D D9 9B 2D -- 04B020
76 00 5C ED 94 9A C6 5E DC 9B 70 45 D9 9B 3D C5 -- 04B030
D4 3E C5 2E 70 45 D9 9B 3D C5 B3 0C 3E C5 2E 1B -- 04B040
0C 3E C5 2E 00 CE E9 04 5D D9 9B 04 45 D8 9B B3 -- 04B050
04 6D D8 9B B3 D4 3E C5 2E 58 45 D9 9B 3D C5 B3 -- 04B060
D9 9B 05 D8 9B B3 D4 3E C5 2E CE 46 D9 9B E3 EB -- 04B070
3E C5 2E 04 5D D9 9B 04 45 D8 9B D2 46 D9 9B 1D -- 04B080
5C D8 26 9B 05 D9 9B B3 D4 3E C5 2E 35 C4 B3 0C -- 04B090
B3 0C 3E C5 2E FF 0F E9 03 73 00 5C ED 94 9A 6C -- 04B0A0
5E DD 9B 74 44 D8 26 9B 6C 45 D9 9B 3D C5 35 C4 -- 04B0B0
ED 94 9A C6 5E DC 9B 05 D9 9B B3 D4 3E C5 2E C6 -- 04B0C0
C5 2E 35 C4 B3 0C 3E C5 2E FE E3 E9 03 76 00 5C -- 04B0D0
5C ED 94 9A 70 5C D8 26 9B 04 45 D9 9B B3 D4 3E -- 04B0E0
9B 3D C5 35 C4 B3 0C 3E C5 2E FE C4 E9 03 73 00 -- 04B0F0
D4 3E C5 2E BE 5E DD 9B 78 44 D8 26 9B 70 45 D9 -- 04B100
03 76 00 5C ED 94 9A BE 5E DC 9B 04 45 D9 9B B3 -- 04B110
56 CB 5E 5F C9 9B 00 01 05 C7 0A 7E C5 FE 97 E9 -- 04B120
E8 5E D9 9B EC 56 D9 9B EE D9 9B 00 00 2A C8 57 -- 04B130
46 D9 9B 04 C4 83 00 5C E0 79 9A 50 D8 46 8D 16 -- 04B140
5D D9 9B EC 46 D9 9B 1D D9 9B B3 EC 3E C5 2E E8 -- 04B150
9A 04 64 D8 26 9B 04 45 D9 9B B3 D4 36 C4 2E 04 -- 04B160
D9 9B B3 EC 3E C5 2E B3 D4 36 C4 2E 00 5C ED 99 -- 04B170
83 00 34 A1 35 9A 00 5C ED 99 9A 24 D8 26 9B 05 -- 04B180
40 D0 9A 6F 6A 03 6A 16 6A 50 D6 46 8D 16 10 C4 -- 04B190
16 00 54 C8 1C 9A 00 44 57 40 9A 0A C4 83 00 64 -- 04B1A0
83 00 64 40 D0 9A 6F 6A 03 6A 16 6A 50 D6 46 8D -- 04B1B0
00 44 5F EB 9A 05 74 C0 0B 00 34 B1 2D 9A 0A C4 -- 04B1C0
```

```
83 00 64 13 E7 9A 50 D6 46 8D 16 00 34 B0 C3 9A -- 04B1D0
FE 46 C7 00 00 26 C8 57 56 CB 5E 5F C9 9B 04 C4 -- 04B1E0
6A 77 00 5C ED 94 9A 0A 5E DC 9B EE D9 9B 00 00 -- 04B1F0
66 DC 9B 54 45 D9 9B 3D C5 B3 0C 3E C5 2E 01 FE -- 04B200
5C ED 94 9A FA 5E D8 9B EE D9 9B FA 5E D9 9B 0A -- 04B210
F6 5E D9 9B FA 46 D9 9B 04 EB EE D9 9B 05 76 00 -- 04B220
9B FA 66 D8 9B 6C 45 D9 9B 3D C5 B3 0C 3E C5 2E -- 04B230
76 00 5C ED 94 9A DA 5E DC 9B EE D9 9B DA 5E DD -- 04B240
45 D9 9B 3D C5 B3 0C 3E C5 2E 0F EB EE D9 9B 05 -- 04B250
0C 3E C5 2E 00 BF E9 E6 5E D9 9B FA 66 D8 9B 6C -- 04B260
2E FA 5E D9 9B 0A 66 DC 9B 54 45 D9 9B 3D C5 B3 -- 04B270
DD 9B FA 66 D8 9B 6C 45 D9 9B 3D C5 B3 0C 3E C5 -- 04B280
05 76 00 5C ED 94 9A DA 5E DC 9B EE D9 9B DA 5E -- 04B290
6C 45 D9 9B 3D C5 B3 0C 3E C5 2E 0F EB EE D9 9B -- 04B2A0
2E DA 5E DD 9B EE D9 9B E6 5E D9 9B FA 66 D8 9B -- 04B2B0
DC 9B FA 66 D8 9B 6C 45 D9 9B 3D C5 B3 0C 3E C5 -- 04B2C0
C5 26 B3 0C 36 C4 2E 4B 73 00 5C ED 94 9A DA 5E -- 04B2D0
3E C5 2E DA 5E DD 9B 6C 65 D8 9B FA 46 D9 9B 3C -- 04B2E0
ED 94 9A DA 5E DC 9B 00 B6 85 D9 9B 3D C5 B3 0C -- 04B2F0
00 B6 85 D9 9B 3D C5 B3 0C 3E C5 2E 0E 73 00 5C -- 04B300
D8 9B FA 46 D9 9B 3C C5 26 B3 0C 36 C4 2E 15 EB -- 04B310
B3 0C 3E C5 2E F6 5E D9 9B EE D9 9B 03 EB 6C 65 -- 04B320
9B EE 5E D9 9B F6 66 D8 9B 00 B6 85 D9 9B 3D C5 -- 04B330
3E C5 2E 6A 77 00 5C ED 94 9A 12 5E DC 9B EE D9 -- 04B340
FA 5E D9 9B 12 66 DC 9B 58 45 D9 9B 3D C5 B3 0C -- 04B350
D9 9B 05 76 00 5C ED 94 9A FA 5E D8 9B EE D9 9B -- 04B360
B3 0C 3E C5 2E F2 5E D9 9B FA 46 D9 9B 04 EB EE -- 04B370

D9 9B DA 5E DD 9B FA 66 D8 9B 70 45 D9 9B 3D C5 -- 04B380
EB EE D9 9B 05 76 00 5C ED 94 9A DA 5E DC 9B EE -- 04B390
FA 66 D8 9B 70 45 D9 9B 3D C5 B3 0C 3E C5 2E 0F -- 04B3A0
D9 9B 3D C5 B3 0C 3E C5 2E 00 BF E9 E2 5E D9 9B -- 04B3B0
C5 B3 0C 3E C5 2E FA 5E D9 9B 12 66 DC 9B 58 45 -- 04B3C0
EE D9 9B DA 5E DD 9B FA 66 D8 9B 70 45 D9 9B 3D -- 04B3D0
0F EB EE D9 9B 05 76 00 5C ED 94 9A DA 5E DC 9B -- 04B3E0
9B FA 66 D8 9B 70 45 D9 9B 3D C5 B3 0C 3E C5 2E -- 04B3F0
0C 3E C5 2E DA 5E DD 9B EE D9 9B E2 5E D9 01 FE -- 04B400
9A DA 5E DC 9B FA 66 D8 9B 70 45 D9 9B 3D C5 B3 -- 04B410
D9 9B 3C C5 26 B3 0C 36 C4 2E 4B 73 00 5C ED 94 -- 04B420
C5 B3 0C 3E C5 2E DA 5E DD 9B 70 65 D8 9B FA 46 -- 04B430
73 00 5C ED 94 9A DA 5E DC 9B 00 B2 85 D9 9B 3D -- 04B440
2E 15 EB 00 B2 85 D9 9B 3D C5 B3 0C 3E C5 2E 0E -- 04B450
EB 70 65 D8 9B FA 46 D9 9B 3C C5 26 B3 0C 36 C4 -- 04B460
9B 3D C5 B3 0C 3E C5 2E F2 5E D9 9B EE D9 9B 03 -- 04B470
E2 46 D9 9B EA 5E D9 9B F2 66 D8 9B 00 B2 85 D9 -- 04B480
D9 9B 00 5C ED 99 9A E6 46 D9 9B 00 5C ED 99 9A -- 04B490
00 5C ED 99 9A EE 46 D9 9B 00 5C ED 99 9A EA 46 -- 04B4A0
ED 99 9A F6 46 D9 9B 00 5C ED 99 9A F2 46 D9 9B -- 04B4B0
56 CB 5E 5F C9 9B 30 C4 83 00 34 95 D7 9A 00 5C -- 04B4C0
9A B3 D8 36 FF 2E B3 DA 36 FF 2E 00 00 2A C8 57 -- 04B4D0
9A 05 D9 9B B3 DC 3E C5 2E 04 C4 83 00 34 EE 9B -- 04B4E0
5C ED 99 9A 05 D9 9B B3 D8 3E C5 2E 00 5C ED 99 -- 04B4F0
3E C5 2E E6 5E D9 9B 10 C4 83 00 5C 26 62 9A 00 -- 04B500
3E C5 2E EC 5E D9 9B E6 4E D8 9B 05 D9 9B B3 F0 -- 04B510
46 8D 16 F0 5E D9 9B E6 4E D8 9B 05 D9 9B B3 F4 -- 04B520
C5 2E 02 6A 50 F4 46 8D 16 50 F8 46 8D 16 50 EA -- 04B530
83 00 64 3D BA 9A 01 90 68 06 6A 35 FF B3 F8 3E -- 04B540
DD 9B F4 76 D8 9B F8 66 D8 9B EC 46 D9 9B 14 C4 -- 04B550
9B B3 E8 3E C5 2E DE 66 DC 9B EC 46 D9 9B DE 5E -- 04B560
DD 9B F4 76 D8 9B FC 66 D8 9B F0 46 D9 9B 1D D9 -- 04B570
```

```
D9 9B 04 5D D9 9B DE 66 DC 9B F0 46 D9 9B DE 5E -- 04B580
5C ED 94 9A DE 5E DC 9B 05 D9 9B DE 5E DD 9B EE -- 04B590
9B B3 E8 3E C5 2E D6 5E DD 9B EE D9 9B 1B 75 00 -- 04B5A0
C5 2E 23 74 00 5C ED 94 9A D6 5E DC 9B 04 45 D9 -- 04B5B0
E8 3E C5 2E 00 5C ED 99 9A 04 45 D9 9B B3 E8 3E -- 04B5C0
C4 83 00 34 A1 35 9A 00 5C ED 99 9A 05 D9 9B B3 -- 04B5D0
FE 46 8D 16 00 00 02 C8 57 56 CB 5E 5F C9 9B 10 -- 04B5E0
D9 9B B3 70 3E C5 2E 04 C4 83 00 64 14 11 9A 50 -- 04B5F0
05 D9 9B B3 64 3E C5 2E 00 5C ED 99 9A 05 01 FE -- 04B600
ED 99 9A 05 D9 9B B3 74 3E C5 2E 00 5C ED 99 9A -- 04B610
2E 00 5C ED 99 9A 05 D9 9B B3 68 3E C5 2E 00 5C -- 04B620
48 3E C5 2E 00 5C ED 99 9A 05 D9 9B B3 4C 3E C5 -- 04B630
C4 83 00 34 95 D7 9A 00 5C ED 99 9A 05 D9 9B B3 -- 04B640
6A 03 6A 16 6A B2 A0 36 FF 2E B2 A2 36 FF 2E 30 -- 04B650
1C 9A 00 44 57 40 9A 0A C4 83 00 64 40 D0 9A 6F -- 04B660
44 5F EB 9A 05 74 C0 0B 00 34 B1 2D 9A 00 54 C8 -- 04B670
00 02 C8 57 56 CB 5E 5F C9 9B 00 34 B0 C3 9A 00 -- 04B680
5F C9 04 C4 83 00 64 13 E7 9A 50 FE 46 8D 16 00 -- 04B690
3E C5 2E 00 00 FE 46 C7 00 00 14 C8 57 56 CB 5E -- 04B6A0
36 FF 2E B3 1E 36 FF 2E 57 56 00 00 05 C7 B3 9C -- 04B6B0
2E 57 56 5E 5F 00 8C 00 02 9A 0A 6A 00 6A B3 1C -- 04B6C0
00 02 9A 0A 6A 00 6A B3 2C 36 FF 2E B3 2E 36 FF -- 04B6D0
FF 2E B3 1E 36 FF 2E 00 64 04 5E 9A 5E 5F 00 8C -- 04B6E0
FF FF 3D 06 C4 83 00 5C D0 03 9A 0A 6A B3 1C 36 -- 04B6F0
2E 57 56 02 C4 83 00 64 59 DC 9A 12 60 68 49 75 -- 04B700
00 02 9A 0A 6A 00 6A B3 1C 36 FF 2E B3 1E 36 FF -- 04B710

B3 2C 36 FF 2E B3 2E 36 FF 2E 57 56 5E 5F 00 8C -- 04B720
00 64 04 5E 9A 5E 5F 00 8C 00 02 9A 0A 6A 00 6A -- 04B730
B3 1C 3E C5 2E 01 7B E9 05 89 0A 7E C5 00 02 B8 -- 04B740
56 BA EB 57 B3 1E 36 FF 2E 57 56 0A 75 00 3D 80 -- 04B750
B3 1E 36 FF 2E B3 2C 36 FF 2E B3 2E 36 FF 2E 57 -- 04B760
9A B3 1C 36 FF 2E B3 1E 36 FF 2E B3 1C 36 FF 2E -- 04B770
2E 5E 5F 00 5C FE EC 9A 50 04 C4 83 00 64 5C 0E -- 04B780
FF 2E B3 1E 36 FF 2E B3 20 36 FF 2E B3 22 36 FF -- 04B790
B3 28 3E C5 2E 08 C4 83 00 64 5A 60 9A B3 1C 36 -- 04B7A0
28 3E C5 2E 05 88 B3 24 3E C5 2E E4 2A 01 45 8A -- 04B7B0
32 36 FF 2E 05 88 B3 10 3E C5 2E E4 2A 05 8A B3 -- 04B7C0
B3 2C 36 FF 2E B3 2E 36 FF 2E B3 30 36 FF 2E B3 -- 04B7D0
01 45 8A B3 28 3E C5 2E 08 C4 83 00 64 5A 60 9A -- 04B7E0
05 8A B3 28 3E C5 2E 05 88 B3 34 3E C5 2E E4 2A -- 04B7F0
00 64 04 5E 9A 05 88 B3 18 3E C5 2E E4 2A 01 FE -- 04B800
83 00 5C D3 8B 9A B3 1C 36 FF 2E B3 1E 36 FF 2E -- 04B810
FE 46 89 C0 2B 02 EB 00 01 B8 05 74 C0 0B 04 C4 -- 04B820
FF 2E 01 6A FF 6A 12 6A FE CF E9 50 04 74 C0 0B -- 04B830
36 FF 2E B3 2A 36 FF 2E B3 10 36 FF 2E B3 12 36 -- 04B840
EC 46 8D 16 50 52 0C C4 83 00 5C 93 FD 9A B3 28 -- 04B850
68 1B 75 00 FA 7E 83 0A C4 83 00 5C ED 6E 9A 50 -- 04B860
9A 50 EC 46 8D 16 02 C4 83 00 64 59 DC 9A 12 4C -- 04B870
01 6A FF 6A 12 6A FE 85 E9 04 C4 83 00 5C 94 D5 -- 04B880
2E B3 2A 36 FF 2E B3 18 36 FF 2E B3 1A 36 FF 2E -- 04B890
8D 16 50 52 0C C4 83 00 5C 93 FD 9A B3 28 36 FF -- 04B8A0
74 00 FA 7E 83 0A C4 83 00 5C ED 6E 9A 50 EC 46 -- 04B8B0
06 C8 57 56 CB 5E 5F C9 00 01 05 C7 0A 7E C5 AE -- 04B8C0
00 6A B3 1C 36 FF 2E B3 1E 36 FF 2E 57 56 00 00 -- 04B8D0
B3 2E 36 FF 2E 57 56 5E 5F 00 8C 00 02 9A 0A 6A -- 04B8E0
5E 5F 00 8C 00 02 9A 0A 6A 00 6A B3 2C 36 FF 2E -- 04B8F0
3D 83 B3 A0 3E C5 2E 00 00 05 C7 B2 8C 3E C5 2E -- 04B900
F0 3E C5 2E 00 01 05 C7 B2 E8 3E C5 2E 67 74 00 -- 04B910
12 6A 00 01 05 C7 B2 EC 3E C5 2E 00 01 05 C7 B2 -- 04B920
```

```
2E B3 12 36 FF 2E B3 A4 36 FF 2E B3 A6 36 FF 2E -- 04B930
FF 2E 12 6A 0A C4 83 00 5C ED 6E 9A B3 10 36 FF -- 04B940
36 FF 2E B3 1A 36 FF 2E B3 A8 36 FF 2E B3 AA 36 -- 04B950
9A 50 FC 46 8D 16 0A C4 83 00 5C ED 6E 9A B3 18 -- 04B960
81 00 00 FE 46 C7 01 94 E9 04 C4 83 00 54 00 00 -- 04B970
B2 D4 3E 03 2E E7 D1 FE 7E 8B 18 74 01 00 FE 7E -- 04B980
C5 2E E1 EB FE 46 FF 00 01 05 C7 B2 D6 1E 8E 2E -- 04B990
D6 1E 8E 2E B2 D4 3E 03 2E E7 D1 3D 8B B2 98 3E -- 04B9A0
3A 9A 00 02 05 C7 B2 D8 3E C5 2E 00 02 05 C7 B2 -- 04B9B0
F0 3E C5 2E 00 00 05 C7 B2 E8 3E C5 2E 00 44 5E -- 04B9C0
FF 2E 00 00 05 C7 B2 EC 3E C5 2E 00 00 05 C7 B2 -- 04B9D0
D0 9A 6F 6A 03 6A 16 6A B2 A0 36 FF 2E B2 A2 36 -- 04B9E0
00 01 3D 05 8B B2 9C 3E C5 2E 0A C4 83 00 64 40 -- 04B9F0
6A 50 B2 A0 36 FF 2E B2 A2 36 FF 2E 21 7C 01 FE -- 04BA00
9C 3E C5 2E 0A C4 83 00 64 40 D0 9A 01 F6 68 03 -- 04BA10
2E B2 A0 36 FF 2E B2 A2 36 FF 2E D3 EB 0D FF B2 -- 04BA20
D0 9A 01 F5 68 03 6A 50 05 8B 05 FF B2 9C 3E C5 -- 04BA30
0A 74 00 3D 83 B2 A0 3E C5 2E 0A C4 83 00 64 40 -- 04BA40
8B B2 9C 3E C5 2E 02 C4 83 00 44 56 66 9A 35 FF -- 04BA50
05 D9 9B B2 B4 3E C5 2E 05 89 B2 A4 3E C5 2E 05 -- 04BA60
3E C5 2E B2 BC 36 C4 2E 1D D9 9B B2 B0 3E C5 2E -- 04BA70
D9 9B B2 B8 3E C5 2E 04 D8 26 9B 05 D9 9B B2 B4 -- 04BA80
D9 9B B2 C0 3E C5 2E 05 D9 9B B2 C4 3E C5 2E 1D -- 04BA90
26 9B 05 D9 9B B2 C4 3E C5 2E B2 CC 36 C4 2E 1D -- 04BAA0
C7 B2 98 3E C5 2E 1D D9 9B B2 C8 3E C5 2E 04 D8 -- 04BAB0

44 57 40 9A 00 01 05 C7 B2 94 3E C5 2E 00 02 05 -- 04BAC0
B2 AC 3E C5 2E 00 4C 02 61 9A 00 4C 00 BC 9A 00 -- 04BAD0
36 FF 2E B2 A0 36 FF 2E B2 A2 36 FF 2E 16 05 C6 -- 04BAE0
C4 83 00 64 40 D0 9A 6E 6A 05 6A 01 6A 57 B2 AE -- 04BAF0
02 C4 83 00 5C B3 DE 9A 35 FF B2 98 3E C5 2E 0E -- 04BB00
2E B2 A0 36 FF 2E B2 A2 36 FF 2E 00 54 C8 1C 9A -- 04BB10
FF 2E B2 FA 36 FF 2E B2 FC 36 FF 2E B2 FE 36 FF -- 04BB20
01 43 68 0A 6A 00 6A 00 6A 01 6A 10 6A B2 F8 36 -- 04BB30
00 3D 83 B2 A4 3E C5 2E 18 C4 83 00 64 40 D0 9A -- 04BB40
9B B3 FC 3E C5 2E 05 D9 9B B2 B0 3E C5 2E 7E 7E -- 04BB50
9B B4 00 3E C5 2E 05 D9 9B B2 C0 3E C5 2E 1D D9 -- 04BB60
9B B4 04 3E C5 2E 05 D9 9B B2 B8 3E C5 2E 1D D9 -- 04BB70
9B B4 08 3E C5 2E 05 D9 9B B2 C8 3E C5 2E 1D D9 -- 04BB80
FE 36 FF 2E B2 A0 36 FF 2E B2 A2 36 FF 2E 1D D9 -- 04BB90
00 64 40 D0 9A 01 F8 68 04 6A B3 FC 36 FF 2E B3 -- 04BBA0
9A 35 FF 0A 74 00 3D 83 B2 A0 3E C5 2E 0C C4 83 -- 04BBB0
00 00 05 C7 B2 A4 3E C5 2E 02 C4 83 00 44 56 66 -- 04BBC0
83 00 64 4E E3 9A 35 FF 02 75 FF B3 0C 3E C5 2E -- 04BBD0
FA 46 8D 16 00 64 11 62 9A 00 54 A2 55 9A 04 C4 -- 04BBE0
B2 D6 36 FF 2E 57 56 04 C4 83 00 64 13 07 9A 50 -- 04BBF0
38 36 FF 2E B3 3A 36 FF 2E B2 D4 36 FF 2E 01 FE -- 04BC00
B3 3C 3E C5 2E 5E 5F 00 5C FF 6A 9A 01 00 68 B3 -- 04BC10
57 56 CB 5E 5F C9 9B 05 89 B2 D8 3E C5 2E 05 8B -- 04BC20
3E C5 2E 00 00 05 C7 B2 8C 3E C5 2E 00 2A E6 C8 -- 04BC30
83 00 64 59 DC 9A 12 4F 68 16 75 00 3D 80 B3 1C -- 04BC40
A4 19 9A 05 1F E9 05 89 0A 7E C5 00 02 B8 02 C4 -- 04BC50
D0 9A 6F 6A 03 6A 16 6A 50 D5 2A 86 8D 16 00 34 -- 04BC60
00 54 C8 1C 9A 00 44 57 40 9A 0A C4 83 00 64 40 -- 04BC70
C3 9A 00 44 5F EB 9A 05 74 C0 0B 00 34 B1 2D 9A -- 04BC80
49 9A 50 D5 2A 86 8D 16 00 64 11 62 9A 00 34 B0 -- 04BC90
B3 94 3E C5 2E B2 BC 36 C4 2E 04 C4 83 00 64 13 -- 04BCA0
C4 2E 53 73 00 5C ED 94 9A 1C D8 26 9B 05 D9 9B -- 04BCB0
9A 1C D8 26 9B 05 D9 9B B3 98 3E C5 2E B2 CC 36 -- 04BCC0
C5 2E D5 22 9E DD 9B EE D9 9B 3B 73 00 5C ED 94 -- 04BCD0
```

```
00 5C ED 94 9A D5 22 9E DC 9B 05 D9 9B B3 8C 3E -- 04BCE0
9B B3 90 3E C5 2E D5 1A 9E DD 9B EE D9 9B 1F 74 -- 04BCF0
D6 E9 03 74 00 5C ED 94 9A D5 1A 9E DC 9B 05 D9 -- 04BD00
DC 3E C5 2E 02 C4 83 00 64 59 DC 9A 12 4E 68 00 -- 04BD10
99 9A 05 D9 9B B3 70 3E C5 2E 4B 75 02 3D 80 B2 -- 04BD20
00 5C ED 99 9A 05 D9 9B B3 64 3E C5 2E 00 5C ED -- 04BD30
3E C5 2E 00 5C ED 99 9A 05 D9 9B B3 74 3E C5 2E -- 04BD40
9B B3 4C 3E C5 2E 00 5C ED 99 9A 05 D9 9B B3 68 -- 04BD50
EB 05 D9 9B B3 48 3E C5 2E 00 5C ED 99 9A 05 D9 -- 04BD60
5C ED 99 9A EE D9 9B 00 5C ED 99 9A EE D9 9B 35 -- 04BD70
C5 2E 00 5C ED 99 9A 05 D9 9B B3 78 3E C5 2E 00 -- 04BD80
99 9A EE D9 9B 00 5C ED 99 9A 05 D9 9B B3 6C 3E -- 04BD90
00 34 95 D7 9A 00 5C ED 99 9A EE D9 9B 00 5C ED -- 04BDA0
9A 6F 6A 03 6A 16 6A 50 D5 2A 86 8D 16 30 C4 83 -- 04BDB0
54 C8 1C 9A 00 44 57 40 9A 0A C4 83 00 64 40 D0 -- 04BDC0
9A 00 44 5F EB 9A 05 74 C0 0B 00 34 B1 2D 9A 00 -- 04BDD0
FF 2E B3 16 36 FF 2E 12 6A FE 6B E9 00 34 B0 C3 -- 04BDE0
C4 83 00 5C ED 6E 9A 50 D5 52 86 8D 16 B3 14 36 -- 04BDF0
16 B3 50 36 FF 2E B3 52 36 FF 2E 12 6A 0A 01 FE -- 04BE00
2E 12 6A 0A C4 83 00 5C ED 6E 9A 50 D5 40 86 8D -- 04BE10
9A 50 D5 2E 86 8D 16 B3 10 36 FF 2E B3 12 36 FF -- 04BE20
FF 2E B3 1A 36 FF 2E 12 6A 0A C4 83 00 5C ED 6E -- 04BE30
C4 83 00 5C ED 6E 9A 50 D5 64 86 8D 16 B3 18 36 -- 04BE40
86 8D 16 B3 28 36 FF 2E B3 2A 36 FF 2E 66 6A 0A -- 04BE50

DD 9B EE D9 9B 0A C4 83 00 5C ED 6E 9A 50 D5 76 -- 04BE60
DC 9B 6C 45 D9 9B 3D C5 B3 0C 3E C5 2E D5 22 9E -- 04BE70
C5 B3 0C 3E C5 2E 0D 75 00 5C ED 94 9A D5 22 9E -- 04BE80
D9 9B 3D C5 B3 0C 3E C5 2E 0E EB 54 45 D9 9B 3D -- 04BE90
9E DD 9B EE D9 9B D5 E0 9E D9 9B E0 D9 9B 6C 45 -- 04BEA0
9E DC 9B 70 45 D9 9B 3D C5 B3 0C 3E C5 2E D5 22 -- 04BEB0
3D C5 B3 0C 3E C5 2E 0D 75 00 5C ED 94 9A D5 22 -- 04BEC0
45 D9 9B 3D C5 B3 0C 3E C5 2E 0E EB 58 45 D9 9B -- 04BED0
FF 2E B4 0E 36 FF 2E D5 DC 9E D9 9B E0 D9 9B 70 -- 04BEE0
C4 83 00 64 5B B4 9A 50 D5 E4 86 8D 16 B4 0C 36 -- 04BEF0
2C BE 81 00 00 D5 2C 86 C7 00 00 D7 EA 86 C7 08 -- 04BF00
B2 D4 3E 03 2E E7 D1 D5 2C BE 8B 75 7D 01 00 D5 -- 04BF10
D5 2C B6 8B 14 75 00 02 3D 05 8B B2 D6 1E 8E 2E -- 04BF20
12 EB 00 01 D5 EA 85 C7 FE 03 1F 16 FD 8B E6 D1 -- 04BF30
D5 EA 85 C7 FE 03 1F 16 FD 8B E6 D1 D5 2C B6 8B -- 04BF40
B6 8B 26 75 00 02 3D 05 8B B2 90 3E C5 2E 00 00 -- 04BF50
E0 D1 D5 2C 86 8B FE 03 1F 16 FD 8B E6 D1 D5 2C -- 04BF60
D5 EA 84 2B 26 00 01 B8 F1 03 07 16 F5 8B C8 8B -- 04BF70
8B B2 F4 3E C5 2E 83 EB D5 2C 86 FF D5 EA 85 89 -- 04BF80
FF D5 2C BE 81 00 00 D5 2C 86 C7 D7 EC 86 89 05 -- 04BF90
2C BE 8B 37 C4 B3 0C 1E C5 2E 00 98 E9 03 7E 00 -- 04BFA0
05 8B 00 A4 9C 8E 26 00 A2 BC 03 26 02 E7 C1 D5 -- 04BFB0
EE 85 89 FE 03 1F 16 FD 8B 02 E6 C1 D5 2C B6 8B -- 04BFC0
26 02 E7 C1 D5 2C BE 8B 37 C4 B3 0E 1E 8E 2E D7 -- 04BFD0
D5 2C BE 8B 02 45 8B 00 A4 9C 8E 26 00 A2 BC 03 -- 04BFE0
36 C4 2E 24 6A D7 F0 85 89 1F 16 FD 03 02 E7 C1 -- 04BFF0
00 A7 85 03 26 D5 2C 86 6B 3C C5 26 B3 0C 01 FE -- 04C000
6B 50 00 01 05 C3 8B 51 CA 8B D8 8B 00 A9 95 8B -- 04C010
52 24 12 2D C7 03 5A 16 C5 8B F8 8B 24 D5 2C 86 -- 04C020
FF 5D E9 D5 2C 86 FF 0A C4 83 00 5C ED 6E 9A 50 -- 04C030
9B B4 10 3E C5 2E 16 74 00 3D 83 B3 9C 3E C5 2E -- 04C040
14 EB 05 DD 9B B4 14 3E C5 2E EE 5E DD 9B 05 DD -- 04C050
1C 3E C5 2E EE 5E DD 9B 05 D9 9B B4 18 3E C5 2E -- 04C060
C8 1C 9A 00 00 FE 46 C7 F6 5E DD 9B 05 D9 9B B4 -- 04C070
6A 0A 6A 04 6A 50 D5 2E 86 8D 16 2A D2 68 00 54 -- 04C080
```

340

```
00 5C A5 FF 9A B4 20 36 FF 2E B4 22 36 FF 2E 04 -- 04C090
2A BE 83 07 74 01 FE 7E 83 D5 2A 86 89 10 C4 83 -- 04C0A0
16 FB 9A E9 00 03 B8 00 34 A8 12 9A 0B 74 00 D5 -- 04C0B0
00 64 40 D0 9A 6F 6A 03 6A 16 6A 50 D5 2A 86 8D -- 04C0C0
C4 83 00 54 00 00 9A 0A 76 FF 0C 76 FF 0A C4 83 -- 04C0D0
05 C7 FB 68 E9 03 74 00 02 3D 05 8B 0A 7E C5 04 -- 04C0E0
36 FF 2E 50 D5 2A 86 8D 16 00 54 C8 1C 9A 00 01 -- 04C0F0
F8 36 FF 2E B2 FA 36 FF 2E B2 FC 36 FF 2E B2 FE -- 04C100
D0 9A 01 43 68 0A 6A 00 6A 00 6A 01 6A 10 6A B2 -- 04C110
64 13 07 9A 50 D5 2A 86 8D 16 18 C4 83 00 64 40 -- 04C120
B3 0C 3E C5 2E 00 01 05 C7 0A 7E C5 04 C4 83 00 -- 04C130
2E 57 56 04 C4 83 00 64 4E E3 9A 35 FF 02 75 FF -- 04C140
FF 2E B2 D6 36 FF 2E B3 38 36 FF 2E B3 3A 36 FF -- 04C150
3E C5 2E 5E 5F 00 5C FF 6A 9A 01 00 68 B2 D4 36 -- 04C160
00 54 A2 55 9A 05 89 B3 3C 3E C5 2E 05 8B B2 D8 -- 04C170
3E C5 2E EE D9 9B EC 8B 55 57 56 CB 5E 5F C9 9B -- 04C180
B3 0C 3E C5 2E 57 56 1D D9 9B 04 55 D9 9B B3 E8 -- 04C190
68 B4 24 36 FF 2E B4 26 36 FF 2E 35 FF 02 75 FF -- 04C1A0
57 56 CB 5E 5F C9 9B 5E 5F 00 5C FE EC 9A 00 BA -- 04C1B0
D8 9B 0A 7E C5 05 D9 9B B3 E8 3E C5 2E EC 8B 55 -- 04C1C0
C5 04 45 D9 9B B3 E8 3E C5 2E 10 5D D9 9B 10 45 -- 04C1D0
56 CB 5E 5F C9 9B 14 5D D9 9B 14 45 D8 9B 0A 7E -- 04C1E0
9A B3 D8 36 FF 2E B3 DA 36 FF 2E 00 00 10 C8 57 -- 04C1F0

F8 5E DD 9B EE D9 9B 04 C4 83 00 34 EE 9B 01 FE -- 04C200
5C ED 94 9A F8 5E DC 9B 05 D9 9B B3 94 3E C5 2E -- 04C210
05 D9 9B B3 8C 3E C5 2E B3 D8 36 C4 2E 18 75 00 -- 04C220
DD 9B EE D9 9B 62 76 00 5C ED 94 9A 1C D8 26 9B -- 04C230
94 9A F0 5E DC 9B 05 D9 9B B3 98 3E C5 2E F0 5E -- 04C240
9B B3 90 3E C5 2E B3 E0 36 C4 2E 18 75 00 5C ED -- 04C250
36 C4 2E 30 76 00 5C ED 94 9A 1C D8 26 9B 05 D9 -- 04C260
94 9A 1C D8 26 9B 05 D9 9B B3 94 3E C5 2E B3 DC -- 04C270
9B B3 98 3E C5 2E B3 E4 36 C4 2E 18 73 00 5C ED -- 04C280
EB C0 2B 04 72 00 5C ED 94 9A 1C D8 26 9B 05 D9 -- 04C290
56 00 01 2A C8 57 56 CB 5E 5F C9 9B 00 01 B8 03 -- 04C2A0
E6 86 8D 16 50 D0 46 8D 16 0E 76 FF 10 76 FF 57 -- 04C2B0
1A 74 00 FE E6 BE 83 5E 5F 00 64 39 0E 9A 50 FE -- 04C2C0
64 28 52 9A FE E6 B6 FF 03 6A 00 6A 00 6A 00 6A -- 04C2D0
DC 9B E0 46 DD 9B 9B 60 EB FE E6 86 8B 0A C4 83 00 -- 04C2E0
DC 9B 66 45 D9 9B 0A 7E C5 FE DE 9E DD 9B F0 76 -- 04C2F0
DC 9B E0 46 DD 9B 20 77 00 5C ED 94 9A FE DE 9E -- 04C300
DC 9B 62 45 D9 9B 0A 7E C5 FE D6 9E DD 9B F0 76 -- 04C310
13 74 00 12 7E 83 1E 76 00 5C ED 94 9A FE D6 9E -- 04C320
00 64 28 52 9A 12 93 68 03 6A 00 6A 00 6A 00 6A -- 04C330
00 CB 5E 5F C9 9B C0 2B 02 EB 12 93 B8 0A C4 83 -- 04C340
00 3C 91 10 00 3C 91 0E 00 24 77 8E 00 3C 86 9A -- 04C350
00 3C B3 24 00 3C 86 9E 00 6C 20 84 00 3C 86 9C -- 04C360
00 3C 92 3C 00 3C 90 A0 00 3C 92 38 00 3C 91 18 -- 04C370
00 3C 92 44 00 3C 90 A4 00 3C 92 40 00 3C 90 7A -- 04C380
00 3C B3 10 00 3C AF 10 00 6C 21 7A 00 3C 90 7E -- 04C390
00 3C 90 C2 00 6C 20 86 00 3C 90 36 00 6C 20 8C -- 04C3A0
00 6C 21 8C 00 6C 20 8A 00 3C 91 14 00 3C 90 C4 -- 04C3B0
00 3C 91 12 00 24 F4 7A 00 6C 21 68 00 6C 21 7C -- 04C3C0
00 3C 90 FC 00 3C 86 F6 00 3C 90 EA 00 6C 21 8E -- 04C3D0
00 3C 86 A2 00 3C 90 EB 00 6C 20 7A 00 3C 90 ED -- 04C3E0
00 3C B1 10 00 3C 90 FD 00 6C 20 80 00 3C 90 FF -- 04C3F0
21 06 00 3C 87 6E 00 6C 21 1E 00 3C B3 12 01 FE -- 04C400
21 76 00 3C AE 60 00 3C 90 C6 00 6C 21 0A 00 6C -- 04C410
21 0E 00 6C 21 16 00 6C 20 E4 00 6C 20 90 00 6C -- 04C420
29 26 00 6C 21 12 00 6C 21 1A 00 6C 29 2A 00 6C -- 04C430
```

341

```
28  D4  00  6C  28  D0  00  6C  28  CC  00  6C  28  C8  00  6C  --  04C440
28  E4  00  6C  28  E0  00  6C  28  EC  00  6C  28  E8  00  6C  --  04C450
21  54  00  6C  21  42  00  6C  21  66  00  24  77  96  00  6C  --  04C460
21  2C  00  3C  90  DB  00  3C  90  C9  00  3C  90  D8  00  6C  --  04C470
87  E2  00  3C  90  D9  00  3C  90  C7  00  6C  21  22  00  6C  --  04C480
21  32  00  6C  20  F6  00  3C  90  DA  00  6C  20  66  00  3C  --  04C490
21  92  00  6C  21  3E  00  6C  21  3A  00  6C  21  36  00  6C  --  04C4A0
F5  A4  00  6C  0D  DC  00  6C  0D  D4  00  6C  20  FE  00  6C  --  04C4B0
91  3E  00  3C  91  36  00  3C  91  3A  00  3C  91  32  00  3C  --  04C4C0
87  DA  00  24  77  A0  00  24  77  98  00  6C  20  6F  00  3C  --  04C4D0
57  56  00  6C  28  74  00  6C  20  72  00  3C  87  DE  00  3C  --  04C4E0
3E  C5  2E  0F  74  00  3D  83  D8  10  3E  C5  2E  EC  8B  55  --  04C4F0
5F  C9  C0  2B  02  EB  00  01  B8  05  74  00  3D  83  D8  14  --  04C500
FA  46  C7  00  01  F8  46  C7  00  00  18  C8  57  56  CB  5E  --  04C510
00  F6  46  C7  00  08  FE  46  C7  00  04  FC  46  C7  00  02  --  04C520
00  02  EA  46  C7  00  01  EC  46  C7  01  00  F4  46  C7  02  --  04C530
56  89  F0  46  89  02  C4  83  00  64  4E  56  9A  F6  76  FF  --  04C540
64  59  DC  9A  10  6D  68  0E  75  F0  46  0B  F2  46  8B  F2  --  04C550
03  E8  7E  83  00  00  E8  46  C7  00  AF  E9  02  C4  83  00  --  04C560
81  E9  03  75  00  02  7D  83  0A  7E  C5  00  93  E9  03  7E  --  04C570
72  74  00  F8  7D  83  1F  16  FD  03  E7  D1  E8  7E  8B  00  --  04C580
FF  E8  76  FF  F0  76  FF  F2  76  FF  16  76  FF  18  76  FF  --  04C590

16  7E  C5  0E  C4  83  00  54  FC  8B  9A  0E  76  FF  10  76  --  04C5A0
00  64  4E  E3  9A  F0  76  FF  F2  76  FF  25  74  00  3D  83  --  04C5B0
35  FF  16  7E  C5  00  6A  00  6A  00  6A  00  6A  04  C4  83  --  04C5C0
E8  46  8B  F4  76  FF  3C  EB  0A  C4  83  00  64  28  52  9A  --  04C5D0
76  FF  F2  76  FF  50  52  14  56  8B  12  46  03  09  E0  C1  --  04C5E0
89  0E  C4  83  00  5C  F6  28  9A  EC  76  FF  EA  76  FF  F0  --  04C5F0
F0  76  FF  F2  76  FF  FF  64  E9  E8  46  FF  EE  46  01  FE  --  04C600
2E  C8  57  56  CB  5E  5F  C9  04  C4  83  00  64  4E  E3  9A  --  04C610
00  F8  46  C7  00  00  FE  46  C7  00  00  FC  46  C7  00  00  --  04C620
6A  FF  6A  12  6A  00  00  D2  46  C7  00  00  FA  46  C7  00  --  04C630
D8  1A  36  FF  2E  D8  1C  36  FF  2E  D8  1E  36  FF  2E  01  --  04C640
16  50  52  0C  C4  83  00  5C  93  FD  9A  D8  18  36  FF  2E  --  04C650
FF  6A  12  6A  0A  C4  83  00  5C  ED  6E  9A  50  E6  46  8D  --  04C660
22  36  FF  2E  D8  24  36  FF  2E  D8  26  36  FF  2E  01  6A  --  04C670
50  52  0C  C4  83  00  5C  93  FD  9A  D8  20  36  FF  2E  D8  --  04C680
E6  46  8B  0A  C4  83  00  5C  ED  6E  9A  50  D4  46  8D  16  --  04C690
89  D6  56  8B  D4  46  8B  FE  56  89  FC  46  89  E8  56  8B  --  04C6A0
83  00  64  4E  A1  9A  04  6A  02  00  68  FA  56  89  F8  46  --  04C6B0
0E  75  C2  0B  02  55  89  05  89  D8  28  3E  C5  2E  04  C4  --  04C6C0
00  68  00  E1  E9  02  C4  83  00  64  59  DC  9A  10  6D  68  --  04C6D0
D8  2C  3E  C5  2E  04  C4  83  00  64  4E  A1  9A  04  6A  02  --  04C6E0
3D  83  D8  30  3E  C5  2E  D7  74  C2  0B  02  55  89  05  89  --  04C6F0
02  75  FF  D8  28  3E  C5  2E  50  D2  46  8D  16  50  75  00  --  04C700
36  FF  2E  D8  36  36  FF  2E  FC  76  FF  FE  76  FF  35  FF  --  04C710
2E  50  D2  46  8D  16  10  C4  83  00  34  B4  4C  9A  D8  34  --  04C720
2E  F8  76  FF  FA  76  FF  35  FF  02  75  FF  D8  2C  3E  C5  --  04C730
C4  83  00  34  B4  4C  9A  D8  38  36  FF  2E  D8  3A  36  FF  --  04C740
02  75  FF  D8  28  3E  C5  2E  50  D2  46  8D  16  52  EB  10  --  04C750
36  FF  2E  D8  36  36  FF  2E  FC  76  FF  FE  76  FF  35  FF  --  04C760
D2  46  8D  16  12  C4  83  00  1C  84  C0  9A  00  6A  D8  34  --  04C770
76  FF  FA  76  FF  35  FF  02  75  FF  D8  2C  3E  C5  2E  50  --  04C780
84  C0  9A  01  6A  D8  38  36  FF  2E  D8  3A  36  FF  2E  F8  --  04C790
83  00  5C  94  D5  9A  50  E6  46  8D  16  12  C4  83  00  1C  --  04C7A0
C9  04  C4  83  00  5C  94  D5  9A  50  D4  46  8D  16  04  C4  --  04C7B0
46  8B  00  FD  F3  86  C6  00  02  1E  C8  57  56  CB  5E  5F  --  04C7C0
03  75  04  FE  7E  83  00  00  FE  46  C7  FD  F1  86  88  0A  --  04C7D0
05  03  09  E0  C1  FE  46  8B  D8  28  3E  C5  2E  01  0E  E9  --  04C7E0
```

EP 0 533 348 A2

```
D8 2C 3E C5 2E FD FA 96 89 FD F8 86 89 02 55 8B -- 04C7F0
F4 86 89 02 55 8B 05 03 09 E0 C1 FE 46 8B 01 FE -- 04C800
75 01 00 FC 7E 81 00 00 FC 46 C7 FD F6 96 89 FD -- 04C810
E7 D1 00 F0 E7 81 04 E7 C1 FC 7E 8B 00 97 E9 03 -- 04C820
3C 0E DC 2E 9B 05 DF 9B FD F6 9E 8E FD F4 BE 03 -- 04C830
03 E7 D1 00 F0 E7 81 FC 7E 8B FD E2 9E DD 9B D8 -- 04C840
D8 3C 0E DC 2E 9B 05 DF 9B FD FA 9E 8E FD F8 BE -- 04C850
83 00 5C ED F9 9A 00 5C ED 99 9A FD E2 86 DC 9B -- 04C860
03 E7 D1 FC 7E 8B 11 7D C0 0B FD EA 86 89 08 C4 -- 04C870
FF FD EA BE 81 2A EB 00 00 FD FC 85 C7 1F 16 FD -- 04C880
FD FC 85 C7 1F 16 FD 03 E7 D1 FC 7E 8B 11 7E 00 -- 04C890
EA 86 8B 1F 16 FD 03 E7 D1 FC 7E 8B 11 EB 00 FF -- 04C8A0
76 FF 0E 76 FF FF 5F E9 FC 46 FF FD FC 85 89 FD -- 04C8B0
FF 50 FD FC 86 8D 16 FD EC B6 FF FD EE B6 FF 0C -- 04C8C0
50 E4 2A FD F3 86 8A 50 E4 2A FD F1 86 8A FE 76 -- 04C8D0
FE 46 FF 16 C4 83 00 64 40 D0 9A 01 45 68 09 6A -- 04C8E0
4E E3 9A 35 FF 02 75 FF D8 28 3E C5 2E FE E9 E9 -- 04C8F0
9A 35 FF 02 75 FF D8 2C 3E C5 2E 04 C4 83 00 64 -- 04C900
2A C8 57 56 CB 5E 5F C9 9B 04 C4 83 00 64 4E E3 -- 04C910
46 36 FF 2E 01 6A 68 01 80 68 02 6A 04 6A 00 00 -- 04C920
83 00 64 00 70 9A 1D 6A 01 6A D8 44 36 FF 2E D8 -- 04C930

48 36 FF 2E D8 4A 36 FF 2E 00 1D D6 46 C7 10 C4 -- 04C940
01 6A 08 C4 83 00 64 5B B4 9A 50 D8 46 8D 16 D8 -- 04C950
64 02 97 9A 35 FF D8 44 3E C5 2E 50 D6 46 8D 16 -- 04C960
3E C5 2E EC 8B 55 57 56 CB 5E 5F C9 08 C4 83 00 -- 04C970
CB 5E 5F C9 02 C4 83 00 64 03 1B 9A 35 FF D8 44 -- 04C980
D8 4C 3E C5 2E 00 00 F2 46 C7 00 00 0E C8 57 56 -- 04C990
89 04 C4 83 00 64 4E A1 9A 01 6A 50 40 40 05 8B -- 04C9A0
46 C6 F4 46 89 F6 46 89 00 02 B8 FE 56 89 FC 46 -- 04C9B0
05 C6 FC 7E C5 00 01 F8 46 C7 7E FB 46 C6 00 FA -- 04C9C0
D8 4C 3E C5 2E 27 74 00 3D 83 D8 50 3E C5 2E 00 -- 04C9D0
2E 50 00 01 05 FC 46 8B 52 57 56 F8 46 01 05 8B -- 04C9E0
00 5C FE EC 9A 35 FF D8 54 36 FF 2E D8 56 36 FF -- 04C9F0
76 FF 50 FA 46 8D 16 50 F2 46 8D 16 5E 5F 01 FE -- 04CA00
0A 6A 00 6A 00 6A F8 76 FF F6 76 FF FC 76 FF FE -- 04CA10
16 02 F4 46 83 18 C4 83 00 64 40 D0 9A 01 43 68 -- 04CA20
FF FC 76 FF FE 76 FF 50 FA 46 8D 16 50 F2 46 8D -- 04CA30
D0 9A 01 43 68 0A 6A 00 6A 01 6A F8 76 FF F6 76 -- 04CA40
64 4E E3 9A FC 76 FF FE 76 FF 18 C4 83 00 64 40 -- 04CA50
59 DC 9A F2 76 FF 0B 74 00 F2 7E 83 04 C4 83 00 -- 04CA60
1E C8 57 56 CB 5E 5F C9 F4 46 8B 02 C4 83 00 64 -- 04CA70
4C 3E C5 2E D8 58 36 C4 2E 00 00 E2 46 C7 00 00 -- 04CA80
C4 83 00 64 4E A1 9A 01 6A 50 04 03 26 05 8B D8 -- 04CA90
00 E8 46 C6 00 03 E4 46 C7 FE 56 89 FC 46 89 04 -- 04CAA0
00 3D 83 D8 50 3E C5 2E 7F EA 46 C6 7E E9 46 C6 -- 04CAB0
D8 58 36 C4 2E 0F EB 05 8B D8 58 3E C5 2E 09 74 -- 04CAC0
FF 57 56 E6 46 89 04 03 26 05 8B D8 4C 3E C5 2E -- 04CAD0
2E D8 5C 36 FF 2E D8 5E 36 FF 2E FC 76 FF FE 76 -- 04CAE0
3E C5 2E 5E 5F 00 5C FE EC 9A 35 FF D8 58 3E C5 -- 04CAF0
05 8B D8 58 3E C5 2E 57 56 29 75 00 3D 83 D8 50 -- 04CB00
36 FF 2E D8 56 36 FF 2E 50 52 FE 56 8B FC 46 03 -- 04CB10
5E 5F 00 5C FE EC 9A 35 FF D8 4C 3E C5 2E D8 54 -- 04CB20
FC 76 FF FE 76 FF 50 E8 46 8D 16 50 E2 46 8D 16 -- 04CB30
9A 01 43 68 0A 6A 00 6A 02 6A E6 76 FF E4 76 FF -- 04CB40
E2 76 FF 0E 74 00 E2 7E 83 18 C4 83 00 64 40 D0 -- 04CB50
D8 4C 3E C5 2E 00 B5 E9 02 C4 83 00 64 59 DC 9A -- 04CB60
46 89 04 C4 83 00 64 4E A1 9A 01 6A 50 40 05 8B -- 04CB70
C5 2E 0D 74 00 3D 83 D8 50 3E C5 2E FA 56 89 F8 -- 04CB80
00 01 E6 46 C7 05 EB E6 46 89 40 05 8B D8 4C 3E -- 04CB90
```

343

```
24 74 00 3D 83 D8 50 3E C5 2E 00 05 C6 F8 7E C5 -- 04CBA0
56 36 FF 2E 50 00 01 05 F8 46 8B FA 76 FF 57 56 -- 04CBB0
FE EC 9A 35 FF D8 4C 3E C5 2E D8 54 36 FF 2E D8 -- 04CBC0
76 FF 50 E8 46 8D 16 50 E2 46 8D 16 5E 5F 00 5C -- 04CBD0
0A 6A 00 6A 00 6A E6 76 FF E4 76 FF F8 76 FF FA -- 04CBE0
74 00 E2 7E 83 18 C4 83 00 64 40 D0 9A 01 43 68 -- 04CBF0
64 4E E3 9A FC 76 FF FE 76 FF FF 59 E9 03 01 FE -- 04CC00
83 00 64 4E E3 9A F8 76 FF FA 76 FF 04 C4 83 00 -- 04CC10
00 E6 46 C7 00 00 1A C8 57 56 CB 5E 5F C9 04 C4 -- 04CC20
04 03 26 05 8B D8 58 3E C5 2E D8 4C 36 C4 2E 00 -- 04CC30
89 04 C4 83 00 64 4E A1 9A 01 6A 50 EA 46 89 40 -- 04CC40
01 05 52 57 56 00 05 C6 FC 7E C5 FE 56 89 FC 46 -- 04CC50
58 3E C5 2E D8 5C 36 FF 2E D8 5E 36 FF 2E 50 00 -- 04CC60
58 3E C5 2E 57 56 5E 5F 00 5C FE EC 9A 35 FF D8 -- 04CC70
56 36 FF 2E 50 52 FE 56 8B FC 46 03 40 05 8B D8 -- 04CC80
FE EC 9A 35 FF D8 4C 3E C5 2E D8 54 36 FF 2E D8 -- 04CC90
46 8D 16 00 01 E8 46 C7 7F EC 46 C6 5E 5F 00 5C -- 04CCA0
E8 76 FF FC 76 FF FE 76 FF 50 EC 46 8D 16 50 E6 -- 04CCB0
64 40 D0 9A 01 43 68 0A 6A 00 6A 02 6A EA 76 FF -- 04CCC0
59 DC 9A E6 76 FF 0D 74 00 E6 7E 83 18 C4 83 00 -- 04CCD0

C7 00 ED 46 C6 7E EC 46 C6 48 EB 02 C4 83 00 64 -- 04CCE0
76 FF 50 EC 46 8D 16 50 E6 46 8D 16 00 02 E8 46 -- 04CCF0
0A 6A 00 6A 01 6A EA 76 FF E8 76 FF FC 76 FF FE -- 04CD00
75 00 E6 7E 83 18 C4 83 00 64 40 D0 9A 01 43 68 -- 04CD10
C9 04 C4 83 00 64 4E E3 9A FC 76 FF FE 76 FF B9 -- 04CD20
01 B8 00 00 F8 46 C7 00 00 08 C8 57 56 CB 5E 5F -- 04CD30
16 00 FE 46 C6 7E FF 46 C6 FC 46 89 FA 46 89 00 -- 04CD40
76 FF 50 FF 46 8D 16 50 FE 46 8D 16 50 F8 46 8D -- 04CD50
40 D0 9A 01 43 68 0A 6A 00 6A 02 6A FC 76 FF FA -- 04CD60
DC 9A F8 76 FF 0B 74 00 F8 7E 83 18 C4 83 00 64 -- 04CD70
00 00 08 C8 57 56 CB 5E 5F C9 02 C4 83 00 64 59 -- 04CD80
46 C6 FC 46 89 FA 46 89 00 01 B8 00 00 F8 46 C7 -- 04CD90
50 FE 46 8D 16 50 F8 46 8D 16 00 FE 46 C6 7E FF -- 04CDA0
6A 00 6A 00 6A FC 76 FF FA 76 FF 50 FF 46 8D 16 -- 04CDB0
00 F8 7E 83 18 C4 83 00 64 40 D0 9A 01 43 68 0A -- 04CDC0
5E 5F C9 02 C4 83 00 64 59 DC 9A F8 76 FF 0B 74 -- 04CDD0
30 3E C5 2E 00 00 E0 46 C7 00 00 22 C8 57 56 CB -- 04CDE0
E2 46 89 C0 2B 50 E0 46 8D 16 46 75 00 3D 83 D8 -- 04CDF0
50 E0 46 8D 16 06 C4 83 00 34 B6 FB 9A 50 01 FE -- 04CE00
50 E4 2A DF 46 8A 50 DF 46 8D 16 50 DF 46 8D 16 -- 04CE10
0A 6A 03 6A 50 E4 2A DF 46 8A 50 E4 2A DF 46 8A -- 04CE20
7E 6A 02 BE E9 18 C4 83 00 64 40 D0 9A 01 43 68 -- 04CE30
3E C5 2E D8 4C 36 C4 2E 02 C4 83 00 4C 00 73 9A -- 04CE40
00 64 4E A1 9A 01 6A 50 40 04 03 26 05 8B D8 58 -- 04CE50
02 B8 50 E0 46 8D 16 FE 56 89 FC 46 89 04 C4 83 -- 04CE60
E4 46 C7 06 C4 83 00 34 B6 FB 9A 50 E2 46 89 00 -- 04CE70
83 D8 50 3E C5 2E 7E E9 46 C6 00 E8 46 C6 00 02 -- 04CE80
36 C4 2E 0F EB 05 8B D8 58 3E C5 2E 09 74 00 3D -- 04CE90
56 E6 46 89 04 03 26 05 8B D8 4C 3E C5 2E D8 58 -- 04CEA0
5C 36 FF 2E D8 5E 36 FF 2E FC 76 FF FE 76 FF 57 -- 04CEB0
2E 5E 5F 00 5C FE EC 9A 35 FF D8 58 3E C5 2E D8 -- 04CEC0
D8 58 3E C5 2E 57 56 29 75 00 3D 83 D8 50 3E C5 -- 04CED0
2E D8 56 36 FF 2E 50 52 FE 56 8B FC 46 03 05 8B -- 04CEE0
00 5C FE EC 9A 35 FF D8 4C 3E C5 2E D8 54 36 FF -- 04CEF0
FF FE 76 FF 50 E8 46 8D 16 50 E0 46 8D 16 5E 5F -- 04CF00
43 68 0A 6A 00 6A 02 6A E6 76 FF E4 76 FF FC 76 -- 04CF10
FF 0E 74 00 E0 7E 83 18 C4 83 00 64 40 D0 9A 01 -- 04CF20
E4 46 C7 01 BF E9 02 C4 83 00 64 59 DC 9A E0 76 -- 04CF30
05 C6 FC 7E C5 00 01 E6 46 C7 7F E8 46 C6 00 01 -- 04CF40
```

344

```
FF 57 FE 76 FF 50 E8 46 8D 16 50 E0 46 8D 16 00 -- 04CF50
D0 9A 01 43 68 0A 6A 00 6A 03 6A E6 76 FF E4 76 -- 04CF60
01 E4 46 C7 B3 75 00 E0 7E 83 18 C4 83 00 64 40 -- 04CF70
36 FF 2E FC 76 FF FE 76 FF 57 56 7F E8 46 C6 00 -- 04CF80
EC 9A 35 FF D8 58 3E C5 2E D8 5C 36 FF 2E D8 5E -- 04CF90
56 29 75 00 3D 83 D8 50 3E C5 2E 5E 5F 00 5C FE -- 04CFA0
50 52 FE 56 8B FC 46 03 05 8B D8 58 3E C5 2E 57 -- 04CFB0
FF D8 4C 3E C5 2E D8 54 36 FF 2E D8 56 36 FF 2E -- 04CFC0
46 8D 16 50 E0 46 8D 16 5E 5F 00 5C FE EC 9A 35 -- 04CFD0
04 6A E6 76 FF E4 76 FF FC 76 FF FE 76 FF 50 E8 -- 04CFE0
83 18 C4 83 00 64 40 D0 9A 01 43 68 0A 6A 00 6A -- 04CFF0
FF D8 4C 3E C5 2E FF 27 E9 03 74 00 E0 7E 01 FE -- 04D000
56 89 F8 46 89 04 C4 83 00 64 4E A1 9A 01 6A 35 -- 04D010
46 C6 7E E9 46 C6 00 E8 46 C6 00 03 E4 46 C7 FA -- 04D020
4C 3E C5 2E 25 74 00 3D 83 D8 50 3E C5 2E 7F EA -- 04D030
56 36 FF 2E F8 76 FF 52 57 56 E6 46 89 05 8B D8 -- 04D040
EB 5E 5F 00 5C FE EC 9A 35 FF D8 54 36 FF 2E D8 -- 04D050
E0 46 8D 16 00 05 C6 F8 7E C5 00 01 E6 46 C7 0B -- 04D060
FF E4 76 FF F8 76 FF FA 76 FF 50 E8 46 8D 16 50 -- 04D070

00 64 40 D0 9A 01 43 68 0A 6A 00 6A 00 6A E6 76 -- 04D080
02 E4 46 C7 FE 95 E9 03 74 00 E0 7E 83 18 C4 83 -- 04D090
7E C5 00 01 E6 46 C7 00 E9 46 C6 7E E8 46 C6 00 -- 04D0A0
76 FF 50 E8 46 8D 16 50 E0 46 8D 16 00 05 C6 F8 -- 04D0B0
43 68 0A 6A 00 6A 01 6A E6 76 FF E4 76 FF 57 FA -- 04D0C0
E9 03 74 00 E0 7E 83 18 C4 83 00 64 40 D0 9A 01 -- 04D0D0
04 C4 83 00 64 4E E3 9A FC 76 FF FE 76 FF FE 4F -- 04D0E0
5F C9 04 C4 83 00 64 4E E3 9A F8 76 FF FA 76 FF -- 04D0F0
3E C5 2E 00 00 F6 46 C7 00 00 12 C8 57 56 CB 5E -- 04D100
46 C7 05 EB 00 01 FC 46 C7 07 74 00 3D 83 D8 60 -- 04D110
FA 46 C7 F8 46 89 FC 7E F7 99 04 00 B8 00 02 FC -- 04D120
34 B8 C6 9A 45 74 00 3D 83 D8 30 3E C5 2E 00 00 -- 04D130
A7 9A 50 E0 D1 EE 5E DD 9B E8 D9 9B FE 46 89 00 -- 04D140
EE 46 DC 9B D8 64 0E DC 2E 9B 02 C4 83 00 5C ED -- 04D150
FE 46 89 08 C4 83 00 5C ED F9 9A 00 5C ED 99 9A -- 04D160
EB 5E 5F 00 5C C0 38 9A 50 F6 46 8D 16 50 57 56 -- 04D170
64 40 D0 9A 6F 6A 03 6A 16 6A 50 F6 46 8D 16 13 -- 04D180
C4 83 00 4C 17 B7 9A 50 F8 46 8D 16 0A C4 83 00 -- 04D190
83 D8 30 3E C5 2E 00 01 05 C7 D8 14 3E C5 2E 04 -- 04D1A0
50 F6 46 8D 16 47 EB 00 34 BB 58 9A 07 74 00 3D -- 04D1B0
2E 0A C4 83 00 64 40 D0 9A 01 91 68 03 6A 03 6A -- 04D1C0
1C 9A 00 44 79 49 9A 0C 74 00 3D 83 D8 6C 3E C5 -- 04D1D0
00 6A 16 6A 7F 6A 50 F6 46 8D 16 1D EB 00 54 C8 -- 04D1E0
83 00 4C 10 41 9A D8 70 36 FF 2E D8 72 36 FF 2E -- 04D1F0
C7 00 00 10 C8 57 56 CB 5E 5F C9 9B 0E C4 01 FE -- 04D200
C5 2E 00 00 FC 46 C7 00 00 FA 46 C7 00 00 F8 46 -- 04D210
FE 46 89 00 34 B8 C6 9A 45 74 00 3D 83 D8 30 3E -- 04D220
83 00 5C ED A7 9A 50 E0 D1 F0 5E DD 9B E8 D9 9B -- 04D230
5C ED 99 9A F0 46 DC 9B D8 64 0E DC 2E 9B 02 C4 -- 04D240
16 50 57 56 FE 46 89 08 C4 83 00 5C ED F9 9A 00 -- 04D250
46 8D 16 13 EB 5E 5F 00 5C C0 38 9A 50 F8 46 8D -- 04D260
0A C4 83 00 64 40 D0 9A 6F 6A 03 6A 16 6A 50 F8 -- 04D270
3E C5 2E 04 C4 83 00 4C 17 B7 9A 50 FA 46 8D 16 -- 04D280
07 74 00 3D 83 D8 30 3E C5 2E 00 00 05 C7 D8 14 -- 04D290
03 6A 02 6A 50 F8 46 8D 16 4C EB 00 34 B9 B0 9A -- 04D2A0
D8 74 3E C5 2E 0A C4 83 00 64 40 D0 9A 01 91 68 -- 04D2B0
EB 00 54 C8 1C 9A 00 44 5F EB 9A 0C 74 00 3D 83 -- 04D2C0
6A 16 6A 35 FF D8 7C 3E C5 2E 50 F8 46 8D 16 22 -- 04D2D0
00 4C 10 41 9A D8 78 36 FF 2E D8 7A 36 FF 2E 00 -- 04D2E0
46 C7 00 00 02 C8 57 56 CB 5E 5F C9 9B 0E C4 83 -- 04D2F0
```

345

```
6A 27 75 00 01 3D 05 8B D8 80 3E C5 2E 00 00 FE -- 04D300
D8 1A 36 FF 2E D8 84 36 FF 2E D8 86 36 FF 2E 00 -- 04D310
3E C5 2E 0A C4 83 00 5C 94 FB 9A D8 18 36 FF 2E -- 04D320
46 74 00 3D 83 D8 30 3E C5 2E 00 00 05 C7 D8 80 -- 04D330
36 74 00 3D 83 D8 88 3E C5 2E 40 74 00 0E 7E 83 -- 04D340
00 64 40 D0 9A 6F 6A 03 6A 35 6A 50 FE 46 8D 16 -- 04D350
46 8D 16 19 75 00 3D 83 D8 6C 3E C5 2E 0A C4 83 -- 04D360
D0 9A 01 F6 68 03 6A 35 FF D8 8C 3E C5 2E 50 FE -- 04D370
0A 74 00 3D 83 D8 88 3E C5 2E 0A C4 83 00 64 40 -- 04D380
6A 50 FE 46 8D 16 36 74 00 3D 83 D8 30 3E C5 2E -- 04D390
3E C5 2E 0A C4 83 00 64 40 D0 9A 6F 6A 03 6A 16 -- 04D3A0
90 3E C5 2E 50 FE 46 8D 16 19 75 00 3D 83 D8 74 -- 04D3B0
0A C4 83 00 64 40 D0 9A 01 F6 68 03 6A 35 FF D8 -- 04D3C0
09 75 00 3D 83 D8 88 3E C5 2E 0A 75 00 0E 7E 83 -- 04D3D0
15 6A 50 FE 46 8D 16 07 EB 13 6A 50 FE 46 8D 16 -- 04D3E0
FF 2E 00 6A 0A C4 83 00 64 40 D0 9A 6F 6A 03 6A -- 04D3F0
0A 76 FF 0C 76 FF D8 94 36 FF 2E D8 96 36 01 FE -- 04D400
83 00 34 E2 22 9A D8 78 36 FF 2E D8 7A 36 FF 2E -- 04D410

FF 0C 76 FF D8 98 36 FF 2E D8 9A 36 FF 2E 0E C4 -- 04D420
57 56 CB 5E 5F C9 08 C4 83 00 34 F3 63 9A 0A 76 -- 04D430
03 B8 50 EE 46 8D 16 00 00 EE 46 C7 00 00 12 C8 -- 04D440
D0 9A 01 91 68 03 6A 50 05 89 D8 9C 3E C5 2E 00 -- 04D450
00 01 3D 05 8B D8 A0 3E C5 2E 0A C4 83 00 64 40 -- 04D460
FF 2E D8 A4 36 FF 2E D8 A6 36 FF 2E 00 6A 27 75 -- 04D470
0A C4 83 00 5C 94 FB 9A D8 20 36 FF 2E D8 22 36 -- 04D480
76 FF 0C 76 FF 10 6A 00 00 05 C7 D8 A0 3E C5 2E -- 04D490
7E 83 0A C4 83 00 5C ED 6E 9A 50 F0 46 8D 16 0A -- 04D4A0
C5 2E 64 75 00 3D 83 D8 88 3E C5 2E 0A 75 00 0E -- 04D4B0
6A 35 6A 50 EE 46 8D 16 36 74 00 3D 83 D8 30 3E -- 04D4C0
D8 6C 3E C5 2E 0A C4 83 00 64 40 D0 9A 6F 6A 03 -- 04D4D0
FF D8 8C 3E C5 2E 50 EE 46 8D 16 19 75 00 3D 83 -- 04D4E0
C5 2E 0A C4 83 00 64 40 D0 9A 01 F6 68 03 6A 35 -- 04D4F0
6A 14 6A 50 EE 46 8D 16 15 74 00 3D 83 D8 88 3E -- 04D500
14 95 9A 05 EB 0A C4 83 00 64 40 D0 9A 6F 6A 03 -- 04D510
76 FF D8 A8 36 FF 2E D8 AA 36 FF 2E 01 6A 00 4C -- 04D520
22 9A D8 70 36 FF 2E D8 72 36 FF 2E 0A 76 FF 0C -- 04D530
D8 AC 36 FF 2E D8 AE 36 FF 2E 0E C4 83 00 34 E2 -- 04D540
10 6A 08 C4 83 00 34 F3 63 9A 0A 76 FF 0C 76 FF -- 04D550
00 5C ED 6E 9A 0A 76 FF 0C 76 FF 50 F0 46 8D 16 -- 04D560
FC 46 C7 00 00 04 C8 57 56 CB 5E 5F C9 0A C4 83 -- 04D570
FF 2E 6B 74 00 01 3D 05 8B D8 A0 3E C5 2E 00 00 -- 04D580
04 C4 83 00 5C D3 78 9A D8 A4 36 FF 2E D8 A6 36 -- 04D590
B2 36 FF 2E D8 B4 36 FF 2E D8 B6 36 FF 2E 24 6A -- 04D5A0
8D 16 0A C4 83 00 5C ED 6E 9A D8 B0 36 FF 2E D8 -- 04D5B0
36 FF 2E D8 A4 36 FF 2E D8 A6 36 FF 2E 50 FC 46 -- 04D5C0
20 36 FF 2E D8 22 36 FF 2E D8 B0 36 FF 2E D8 B2 -- 04D5D0
12 C4 83 00 44 D2 AC 9A 50 FE 46 89 00 01 B8 D8 -- 04D5E0
FF 2E D8 BA 36 FF 2E 00 01 05 C7 D8 A0 3E C5 2E -- 04D5F0
36 FF 2E 04 C4 83 00 34 EE 9B 9A D8 B8 36 01 FE -- 04D600
2E 04 C4 83 00 34 ED BA 9A D8 BC 36 FF 2E D8 BE -- 04D610
C4 83 00 34 DC 4F 9A D8 C0 36 FF 2E D8 C2 36 FF -- 04D620
D8 C6 36 FF 2E D8 C8 36 FF 2E D8 CA 36 FF 2E 04 -- 04D630
5E 5F C9 08 C4 83 00 64 5B B4 9A D8 C4 36 FF 2E -- 04D640
6A 01 00 68 00 00 EC 46 C7 00 00 14 C8 57 56 CB -- 04D650
05 89 D8 CC 3E C5 2E 04 C4 83 00 64 4E A1 9A 04 -- 04D660
D0 3E C5 2E 60 EB 10 6D 68 05 75 C2 0B 02 55 89 -- 04D670
83 00 34 EE 9B 9A 50 F0 46 8D 16 00 01 05 C7 D8 -- 04D680
FF 02 75 FF D8 CC 3E C5 2E 50 EC 46 8D 16 04 C4 -- 04D690
D8 DA 36 FF 2E 02 75 FF 3D C5 D8 DC 3E C5 2E 35 -- 04D6A0
```

346

```
B8 35 FF 02 75 FF D8 D4 3E C5 2E D8 D8 36 FF 2E -- 04D6B0
00 64 1C B4 9A 50 F0 46 8D 16 50 EE 46 89 00 03 -- 04D6C0
64 59 FE 9A EC 76 FF 12 74 00 EC 7E 83 18 C4 83 -- 04D6D0
56 CB 5E 5F C9 00 03 05 C7 0A 7E C5 02 C4 83 00 -- 04D6E0
9B D8 E0 3E C5 2E D8 E4 06 DF 2E 9B EC 8B 55 57 -- 04D6F0
1D D9 9B D8 E6 3E C5 2E D8 E4 06 DF 2E 9B 1D D9 -- 04D700
2E 9B 1D D9 9B D8 EA 3E C5 2E D8 EE 06 DF 2E 9B -- 04D710
FF 2E 10 6A 1D D9 9B D8 F0 3E C5 2E D8 F4 06 DF -- 04D720
36 FF 2E D8 F8 36 FF 2E D8 E0 36 FF 2E D8 E2 36 -- 04D730
D9 02 06 DD 2E 9B 0A C4 83 00 5C ED 6E 9A D8 F6 -- 04D740
1D DD 9B D8 FA 3E C5 2E 15 DD 9B D8 FE 3E C5 2E -- 04D750
E2 36 FF 2E 10 6A EC 8B 55 57 56 CB 5E 5F C9 9B -- 04D760
D9 0A 36 FF 2E D9 0C 36 FF 2E D8 E0 36 FF 2E D8 -- 04D770
2E D8 F8 36 FF 2E 10 6A 0A C4 83 00 5C ED 6E 9A -- 04D780
6E 9A D9 0E 36 FF 2E D9 10 36 FF 2E D8 F6 36 FF -- 04D790
C5 2E 05 DD 9B D8 FA 3E C5 2E 0A C4 83 00 5C ED -- 04D7A0
C5 2E 05 DD 9B D8 FE 3E C5 2E 1D DD 9B D9 12 3E -- 04D7B0

EC 8B 55 57 56 CB 5E 5F C9 9B 1D DD 9B D9 16 3E -- 04D7C0
E2 36 FF 2E D9 0A 36 FF 2E D9 0C 36 FF 2E 10 6A -- 04D7D0
10 6A 0A C4 83 00 5C ED 6E 9A D8 E0 36 FF 2E D8 -- 04D7E0
2E D8 F8 36 FF 2E D9 0E 36 FF 2E D9 10 36 FF 2E -- 04D7F0
C5 2E 0A C4 83 00 5C ED 6E 9A D8 F6 36 FF 01 FE -- 04D800
C5 2E 1D DD 9B D8 FA 3E C5 2E 05 DD 9B D9 12 3E -- 04D810
C9 9B 1D DD 9B D8 FE 3E C5 2E 05 DD 9B D9 16 3E -- 04D820
C5 2E 00 00 FA 46 C7 00 00 0E C8 57 56 CB 5E 5F -- 04D830
9C 3E C5 2E 09 74 C0 0B FE 46 89 05 8B D9 1A 3E -- 04D840
83 39 75 00 3D 83 D8 10 3E C5 2E 00 02 05 C7 D8 -- 04D850
2E 00 34 C6 17 9A 00 34 C6 8D 9A 05 74 00 FE 7E -- 04D860
3D 05 89 D9 1E 3E C5 2E E4 2A 05 8A D9 22 3E C5 -- 04D870
2E 09 EB 00 01 05 C7 D8 30 3E C5 2E 0B 75 00 06 -- 04D880
01 05 C7 D8 88 3E C5 2E 00 00 05 C7 D8 30 3E C5 -- 04D890
16 04 C4 83 00 44 80 76 9A 0A 76 FF 0C 76 FF 00 -- 04D8A0
6A 50 05 89 D8 9C 3E C5 2E 00 02 B8 50 FA 46 8D -- 04D8B0
26 3E C5 2E 0A C4 83 00 64 40 D0 9A 01 91 68 03 -- 04D8C0
52 9A 00 01 05 C7 D8 10 3E C5 2E 00 03 05 C7 D9 -- 04D8D0
01 05 C7 D9 2A 3E C5 2E 00 54 46 A1 9A 00 34 B8 -- 04D8E0
50 FA 46 8D 16 25 74 00 3D 83 D8 30 3E C5 2E 00 -- 04D8F0
C5 2E 0A C4 83 00 64 40 D0 9A 6F 6A 03 6A 35 6A -- 04D900
35 05 C6 D9 2E 3E C5 2E 08 74 00 3D 83 D8 6C 3E -- 04D910
3E C5 2E 00 D1 E9 03 74 00 3D 83 D9 32 3E C5 2E -- 04D920
FF 2E D8 86 36 FF 2E 6A 74 00 01 3D 05 8B D8 80 -- 04D930
D8 80 3E C5 2E 04 C4 83 00 5C D3 78 9A D8 84 36 -- 04D940
D9 3A 36 FF 2E D9 3C 36 FF 2E 24 6A 00 01 05 C7 -- 04D950
83 00 5C ED 6E 9A D9 36 36 FF 2E D9 38 36 FF 2E -- 04D960
84 36 FF 2E D8 86 36 FF 2E 50 FA 46 8D 16 0A C4 -- 04D970
D8 1A 36 FF 2E D9 36 36 FF 2E D9 38 36 FF 2E D8 -- 04D980
00 44 D2 AC 9A 50 FC 46 89 C0 2B D8 18 36 FF 2E -- 04D990
3E C5 2E 3C 75 00 3D 83 D8 30 3E C5 2E 12 C4 83 -- 04D9A0
03 6A 16 6A 50 FA 46 8D 16 32 74 00 3D 83 D8 74 -- 04D9B0
6A 50 FA 46 8D 16 0A C4 83 00 64 40 D0 9A 6F 6A -- 04D9C0
74 F1 9A 0A C4 83 00 64 40 D0 9A 6F 6A 03 6A 13 -- 04D9D0
2E 0A 75 00 FE 7E 83 15 EB 00 54 C8 1C 9A 00 44 -- 04D9E0
54 9A 00 34 C9 B3 9A 05 75 00 3D 83 D8 74 3E C5 -- 04D9F0
6A 50 FA 46 8D 16 00 34 BD 13 9A 00 34 B5 01 FE -- 04DA00
3E C5 2E 0A C4 83 00 64 40 D0 9A 6F 6A 03 6A 14 -- 04DA10
D9 9B 05 D9 9B D9 42 3E C5 2E 00 15 05 C7 D9 3E -- 04DA20
8D 16 F6 5E D9 9B 05 D9 9B D9 46 3E C5 2E F2 5E -- 04DA30
03 6A 50 05 89 D8 9C 3E C5 2E 00 03 B8 50 FA 46 -- 04DA40
50 F2 46 8D 16 0A C4 83 00 64 40 D0 9A 01 91 68 -- 04DA50
```

```
00  02  B8  50  FA  46  8D  16  04  C4  83  00  34  CA  6C  9A  --  04DA60
40  DO  9A  01  91  68  03  6A  50  05  89  D8  9C  3E  C5  2E  --  04DA70
56  CB  5E  5F  C9  9B  00  34  B8  AE  9A  0A  C4  83  00  64  --  04DA80
2E  D9  3C  36  FF  2E  00  00  FC  46  C7  00  00  04  C8  57  --  04DA90
72  9A  D8  78  36  FF  2E  D8  7A  36  FF  2E  D9  3A  36  FF  --  04DAA0
D8  88  3E  C5  2E  D8  90  36  C4  2E  08  C4  83  00  4C  16  --  04DAB0
B8  05  74  00  3D  83  D8  30  3E  C5  2E  0A  74  00  3D  83  --  04DAC0
74  3E  C5  2E  FE  46  89  2C  F7  26  C0  2B  02  EB  00  01  --  04DAD0
D8  7C  3E  C5  2E  50  FC  46  8D  16  25  75  00  3D  83  D8  --  04DAE0
78  36  FF  2E  D8  7A  36  FF  2E  FE  76  FF  16  6A  35  FF  --  04DAF0
D9  50  36  FF  2E  39  EB  0E  C4  83  00  4C  10  41  9A  D8  --  04DB00
2E  D8  78  36  FF  2E  D8  7A  36  FF  2E  D9  4E  36  FF  2E  --  04DB10
C4  83  00  34  E4  2E  9A  D9  4A  36  FF  2E  D9  4C  36  FF  --  04DB20
9A  00  44  5F  EB  9A  00  01  05  C7  D9  2A  3E  C5  2E  0C  --  04DB30
46  C7  00  00  22  C8  57  56  CB  5E  5F  C9  00  54  C8  1C  --  04DB40
3E  C5  2E  49  75  00  3D  83  D9  52  3E  C5  2E  00  00  FE  --  04DB50

00  34  DC  20  9A  50  DE  46  8D  16  00  03  05  C7  D8  9C  --  04DB60
50  DE  46  8D  16  0A  76  FF  0C  76  FF  00  6A  04  C4  83  --  04DB70
2E  00  6A  0E  C4  83  00  44  16  FF  9A  50  EE  46  8D  16  --  04DB80
73  9A  50  EE  46  8D  16  D8  A8  36  FF  2E  D8  AA  36  FF  --  04DB90
6A  00  14  05  C7  D9  56  3E  C5  2E  0A  C4  83  00  34  F8  --  04DBA0
8D  16  00  54  C8  1C  9A  02  C4  83  00  44  77  0B  9A  01  --  04DBB0
56  CB  5E  5F  C9  04  C4  83  00  64  11  E8  9A  50  FE  46  --  04DBC0
C7  00  00  FE  46  C7  00  00  FC  46  C7  00  00  20  C8  57  --  04DBD0
E1  46  C6  7F  E3  46  C6  00  00  E4  46  C7  00  00  E6  46  --  04DBE0
00  44  1E  70  9A  08  75  00  3D  83  D9  5A  3E  C5  2E  00  --  04DBF0
D8  A0  3E  C5  2E  33  74  00  E4  7E  83  E4  46  89  01  FE  --  04DC00
FF  2E  D8  A6  36  FF  2E  00  6A  27  75  00  01  3D  05  8B  --  04DC10
94  FB  9A  D8  20  36  FF  2E  D8  22  36  FF  2E  D8  A4  36  --  04DC20
C5  2E  00  00  05  C7  D8  A0  3E  C5  2E  0A  C4  83  00  5C  --  04DC30
6A  35  6A  50  E6  46  8D  16  36  74  00  3D  83  D8  30  3E  --  04DC40
D8  6C  3E  C5  2E  0A  C4  83  00  64  40  DO  9A  6F  6A  03  --  04DC50
FF  D8  8C  3E  C5  2E  50  E6  46  8D  16  19  75  00  3D  83  --  04DC60
8D  16  0A  C4  83  00  64  40  DO  9A  01  F6  68  03  6A  35  --  04DC70
C4  83  00  64  40  DO  9A  6F  6A  03  6A  14  6A  50  E6  46  --  04DC80
1E  36  FF  2E  01  6A  FF  6A  12  6A  00  54  46  A1  9A  0A  --  04DC90
D8  18  36  FF  2E  D8  1A  36  FF  2E  D8  1C  36  FF  2E  D8  --  04DCA0
9A  50  EA  46  8D  16  50  52  0C  C4  83  00  5C  93  FD  9A  --  04DCB0
FC  46  89  EC  56  8B  EA  46  8B  0A  C4  83  00  5C  ED  6E  --  04DCC0
FF  52  50  E8  46  89  C0  2B  50  E6  46  8D  16  FE  56  89  --  04DCD0
9A  50  EA  46  8D  16  0A  C4  83  00  5C  61  60  9A  FC  76  --  04DCE0
74  00  3D  83  D8  30  3E  C5  2E  04  C4  83  00  5C  94  D5  --  04DCF0
6A  00  6A  00  6A  00  6A  50  E6  46  8D  16  00  85  E9  03  --  04DD00
DO  9A  01  43  68  0A  6A  01  6A  00  6A  00  6A  00  6A  00  --  04DD10
6A  03  6A  16  6A  50  E6  46  8D  16  18  C4  83  00  64  40  --  04DD20
3D  83  D9  5A  3E  C5  2E  0A  C4  83  00  64  40  DO  9A  6F  --  04DD30
6A  35  FF  D8  7C  3E  C5  2E  50  E6  46  8D  16  46  75  00  --  04DD40
10  41  9A  D8  78  36  FF  2E  D8  7A  36  FF  2E  00  6A  16  --  04DD50
16  50  E1  46  8D  16  50  E6  46  8D  16  0E  C4  83  00  4C  --  04DD60
43  68  0A  6A  00  6A  05  6A  01  6A  01  6A  50  E3  46  8D  --  04DD70
3D  83  D8  50  3E  C5  2E  18  C4  83  00  64  40  DO  9A  01  --  04DD80
2E  00  4C  03  F3  9A  05  EB  00  4C  02  61  9A  07  74  00  --  04DD90
13  05  C7  D9  56  3E  C5  2E  00  13  05  C7  D9  3E  3E  C5  --  04DDA0
00  64  13  07  9A  50  E6  46  8D  16  00  64  11  62  9A  00  --  04DDB0
50  E6  46  8D  16  16  05  C6  D9  5E  3E  C5  2E  04  C4  83  --  04DDC0
64  40  DO  9A  6E  6A  05  6A  01  6A  57  D9  60  36  FF  2E  --  04DDD0
3E  C5  2E  00  00  05  C7  D8  88  3E  C5  2E  0E  C4  83  00  --  04DDE0
C5  2E  C0  2B  02  EB  00  01  B8  05  75  00  3D  83  D9  5A  --  04DDF0
00  08  C8  57  56  CB  5E  5F  C9  05  89  D9  32  3E  01  FE  --  04DE00
```

```
D9  32  3E  C5  2E  00  34  CA  F3  9A  00  00  F8  46  C7  00  --  04DE10
9C  3E  C5  2E  00  03  B8  50  F8  46  8D  16  00  00  05  C7  --  04DE20
C4  83  00  64  40  D0  9A  01  91  68  03  6A  50  05  89  D8  --  04DE30
D8  72  36  FF  2E  D8  B4  36  FF  2E  D8  B6  36  FF  2E  0A  --  04DE40
14  95  9A  08  C4  83  00  4C  16  72  9A  D8  70  36  FF  2E  --  04DE50
34  B9  B0  9A  07  74  00  3D  83  D8  30  3E  C5  2E  00  4C  --  04DE60
BC  65  9A  05  74  00  3D  83  D8  6C  3E  C5  2E  0F  EB  00  --  04DE70
D9  62  3E  C5  2E  00  01  05  C7  D9  2A  3E  C5  2E  00  34  --  04DE80
C8  1C  9A  02  C4  83  00  44  77  0B  9A  01  6A  04  05  C6  --  04DE90
2E  35  FF  02  75  FF  D8  D4  3E  C5  2E  08  00  68  00  54  --  04DEA0
C4  83  00  54  3C  28  9A  D8  D8  36  FF  2E  D8  DA  36  FF  --  04DEB0
83  00  34  C5  79  9A  50  FE  46  8D  16  0D  75  C0  0B  0A  --  04DEC0
89  00  01  B8  0F  75  00  3D  83  D8  30  3E  C5  2E  04  C4  --  04DED0
50  F8  46  8D  16  02  C4  83  00  4C  C3  85  9A  50  FC  46  --  04DEE0
01  91  68  03  6A  50  05  89  D8  9C  3E  C5  2E  00  02  B8  --  04DEF0

00  3D  83  D8  30  3E  C5  2E  0A  C4  83  00  64  40  D0  9A  --  04DF00
F8  46  8D  16  18  74  00  3D  83  D8  6C  3E  C5  2E  22  75  --  04DF10
9A  0A  C4  83  00  64  40  D0  9A  6F  6A  03  6A  16  6A  50  --  04DF20
7E  75  00  01  3D  05  8B  D8  80  3E  C5  2E  00  34  BC  BC  --  04DF30
83  D8  74  3E  C5  2E  3D  75  00  3D  83  D8  30  3E  C5  2E  --  04DF40
35  FF  D8  7C  3E  C5  2E  50  F8  46  8D  16  29  75  00  3D  --  04DF50
FF  2E  D8  7A  36  FF  2E  35  FF  D8  90  3E  C5  2E  16  6A  --  04DF60
5F  EB  9A  0A  EB  0E  C4  83  00  4C  10  41  9A  D8  78  36  --  04DF70
00  6A  00  6A  50  F8  46  8D  16  00  54  C8  1C  9A  00  44  --  04DF80
2E  D8  86  36  FF  2E  D9  36  36  FF  2E  D9  38  36  FF  2E  --  04DF90
C0  2B  D8  18  36  FF  2E  D8  1A  36  FF  2E  D8  84  36  FF  --  04DFA0
C5  2E  2B  EB  16  C4  83  00  44  D8  B4  9A  50  FA  46  89  --  04DFB0
74  00  3D  83  D8  30  3E  C5  2E  00  01  05  C7  D9  2A  3E  --  04DFC0
9A  05  EB  04  C4  83  00  44  5A  4B  9A  00  6A  00  6A  0E  --  04DFD0
3D  83  D8  30  3E  C5  2E  00  54  C8  1C  9A  00  44  74  F1  --  04DFE0
00  02  B8  0F  74  00  3D  83  D8  74  3E  C5  2E  19  75  00  --  04DFF0
C5  2E  02  C4  83  00  4C  C3  85  9A  50  FC  46  89  01  FE  --  04E000
13  49  9A  50  F8  46  8D  16  1A  74  00  3D  83  D8  30  3E  --  04E010
83  00  64  12  4F  9A  50  F8  46  8D  16  04  C4  83  00  64  --  04E020
00  0C  C8  57  56  CB  5E  5F  C9  00  44  67  53  9A  04  C4  --  04E030
C5  2E  00  05  C6  D9  62  3E  C5  2E  00  00  FC  46  C7  00  --  04E040
00  01  05  C7  D9  52  3E  C5  2E  00  01  05  C7  D8  88  3E  --  04E050
2E  00  34  C4  A1  9A  00  44  67  06  9A  00  54  46  A1  9A  --  04E060
3D  05  8B  D8  80  3E  C5  2E  00  01  05  C7  D9  2A  3E  C5  --  04E070
78  9A  D8  84  36  FF  2E  D8  86  36  FF  2E  6A  74  00  01  --  04E080
6A  00  01  05  C7  D8  80  3E  C5  2E  04  C4  83  00  5C  D3  --  04E090
D9  38  36  FF  2E  D9  3A  36  FF  2E  D9  3C  36  FF  2E  24  --  04E0A0
46  8D  16  0A  C4  83  00  5C  ED  6E  9A  D9  36  36  FF  2E  --  04E0B0
38  36  FF  2E  D8  84  36  FF  2E  D8  86  36  FF  2E  50  FC  --  04E0C0
D8  18  36  FF  2E  D8  1A  36  FF  2E  D9  36  36  FF  2E  D9  --  04E0D0
C5  2E  12  C4  83  00  44  D2  AC  9A  50  FE  46  89  C0  2B  --  04E0E0
00  3D  83  D8  74  3E  C5  2E  72  75  00  3D  83  D8  30  3E  --  04E0F0
89  D8  9C  3E  C5  2E  00  02  B8  50  FC  46  8D  16  4F  74  --  04E100
16  0A  C4  83  00  64  40  D0  9A  01  91  68  03  6A  50  05  --  04E110
83  00  64  40  D0  9A  6F  6A  03  6A  16  6A  50  FC  46  8D  --  04E120
40  D0  9A  6F  6A  03  6A  13  6A  50  FC  46  8D  16  0A  C4  --  04E130
EB  00  54  C8  1C  9A  00  44  74  F1  9A  0A  C4  83  00  64  --  04E140
68  03  6A  35  FF  D8  90  3E  C5  2E  50  FC  46  8D  16  19  --  04E150
6A  50  FC  46  8D  16  0A  C4  83  00  64  40  D0  9A  01  F6  --  04E160
3E  C5  2E  0A  C4  83  00  64  40  D0  9A  6F  6A  03  6A  14  --  04E170
00  34  BD  13  9A  00  34  B5  54  9A  00  15  05  C7  D9  3E  --  04E180
50  05  89  D8  9C  3E  C5  2E  00  03  B8  50  FC  46  8D  16  --  04E190
46  8D  16  0A  C4  83  00  64  40  D0  9A  01  91  68  03  6A  --  04E1A0
83  D8  30  3E  C5  2E  04  C4  83  00  34  E1  9D  9A  50  F4  --  04E1B0
```

```
9A 6F 6A 03 6A 35 6A 50 FC 46 8D 16 36 74 00 3D -- 04E1C0
75 00 3D 83 D8 6C 3E C5 2E 0A C4 83 00 64 40 D0 -- 04E1D0
68 03 6A 35 FF D8 8C 3E C5 2E 50 FC 46 8D 16 19 -- 04E1E0
9A 50 F4 46 8D 16 0A C4 83 00 64 40 D0 9A 01 F6 -- 04E1F0
02 B8 50 FC 46 8D 16 04 C4 83 00 34 CA 6C 01 FE -- 04E200
D0 9A 01 91 68 03 6A 50 05 89 D8 9C 3E C5 2E 00 -- 04E210
2E 00 01 05 C7 D9 66 3E C5 2E 0A C4 83 00 64 40 -- 04E220
0A C8 57 56 CB 5E 5F C9 00 00 05 C7 D9 52 3E C5 -- 04E230
BE 36 FF 2E 00 01 F6 46 C7 00 00 F8 46 C7 00 00 -- 04E240
D8 B8 36 FF 2E D8 BA 36 FF 2E D8 BC 36 FF 2E D8 -- 04E250
C7 0A 7E C5 0A 75 C0 0B 08 C4 83 00 44 67 AA 9A -- 04E260
2E 00 01 05 C7 D8 88 3E C5 2E 03 80 E9 00 03 05 -- 04E270
2E 0A 74 00 FE 7E 83 FE 46 89 05 8B D9 1A 3E C5 -- 04E280
C0 2B 02 EB 00 01 B8 05 74 00 3D 83 D9 32 3E C5 -- 04E290

C4 36 FF 2E D8 C6 36 FF 2E 05 89 D8 10 3E C5 2E -- 04E2A0
00 64 5B B4 9A D9 6A 36 FF 2E D9 6C 36 FF 2E D8 -- 04E2B0
76 9A 0A 76 FF 0C 76 FF 00 34 C6 17 9A 08 C4 83 -- 04E2C0
2E 00 00 05 C7 D8 88 3E C5 2E 04 C4 83 00 44 80 -- 04E2D0
00 3D 83 D8 30 3E C5 2E 00 01 05 C7 D8 10 3E C5 -- 04E2E0
40 D0 9A 6F 6A 03 6A 35 6A 50 F8 46 8D 16 2A 74 -- 04E2F0
83 D8 6C 3E C5 2E 00 34 B9 B0 9A 0A C4 83 00 64 -- 04E300
26 3E C5 2E 35 05 C6 D9 2E 3E C5 2E 08 74 00 3D -- 04E310
C5 2E 00 01 05 C7 D9 2A 3E C5 2E 00 03 05 C7 D9 -- 04E320
FF 2E D8 AA 36 FF 2E 01 6A 00 03 05 C7 D8 9C 3E -- 04E330
F8 73 9A D8 C0 36 FF 2E D8 C2 36 FF 2E D8 A8 36 -- 04E340
3E C5 2E 04 05 C6 D9 62 3E C5 2E 0A C4 83 00 34 -- 04E350
B6 36 FF 2E 00 9F E9 03 74 00 01 3D 05 8B D8 A0 -- 04E360
D8 70 36 FF 2E D8 72 36 FF 2E D8 B4 36 FF 2E D8 -- 04E370
36 FF 2E 50 F8 46 8D 16 08 C4 83 00 4C 16 72 9A -- 04E380
B0 36 FF 2E D8 B2 36 FF 2E D9 3A 36 FF 2E D9 3C -- 04E390
D8 22 36 FF 2E D8 A4 36 FF 2E D8 A6 36 FF 2E D8 -- 04E3A0
44 D8 B4 9A 50 FC 46 89 00 01 B8 D8 20 36 FF 2E -- 04E3B0
C5 2E 2C 74 00 3D 83 D8 30 3E C5 2E 16 C4 83 00 -- 04E3C0
6A 7F 6A 50 F8 46 8D 16 22 75 00 3D 83 D8 6C 3E -- 04E3D0
36 FF 2E D8 72 36 FF 2E 35 FF D8 8C 3E C5 2E 35 -- 04E3E0
83 D8 6C 3E C5 2E 0E C4 83 00 4C 10 41 9A D8 70 -- 04E3F0
46 8D 16 27 EB 00 44 79 49 9A 33 74 00 3D 01 FE -- 04E400
68 03 6A 50 05 89 D8 9C 3E C5 2E 00 03 B8 50 F8 -- 04E410
44 77 0B 9A 01 6A 0A C4 83 00 64 40 D0 9A 01 91 -- 04E420
D4 3E C5 2E 08 00 68 00 54 C8 1C 9A 02 C4 83 00 -- 04E430
D8 D8 36 FF 2E D8 DA 36 FF 2E 35 FF 02 75 FF D8 -- 04E440
FF 0C 76 FF 0E 75 C0 0B 0A C4 83 00 54 3C 28 9A -- 04E450
83 D8 30 3E C5 2E 04 C4 83 00 34 C5 79 9A 0A 76 -- 04E460
00 4C C3 85 9A 50 FA 46 89 00 01 B8 2C 75 00 3D -- 04E470
46 8D 16 13 74 00 3D 83 D8 6C 3E C5 2E 02 C4 83 -- 04E480
0A C4 83 00 64 40 D0 9A 6F 6A 03 6A 16 6A 50 F8 -- 04E490
50 05 89 D8 9C 3E C5 2E 00 02 B8 50 F8 46 8D 16 -- 04E4A0
3E C5 2E 0A C4 83 00 64 40 D0 9A 01 91 68 03 6A -- 04E4B0
03 75 00 3D 83 D9 32 3E C5 2E 00 01 05 C7 D9 2A -- 04E4C0
D0 9A 6F 6A 03 6A 15 6A 50 F8 46 8D 16 00 89 E9 -- 04E4D0
00 01 3D 05 8B D8 80 3E C5 2E 0A C4 83 00 64 40 -- 04E4E0
D9 38 36 FF 2E 00 6A 00 6A 50 F8 46 8D 16 37 75 -- 04E4F0
2E D8 84 36 FF 2E D8 86 36 FF 2E D9 36 36 FF 2E -- 04E500
9A 50 FC 46 89 C0 2B D8 18 36 FF 2E D8 1A 36 FF -- 04E510
5A 4B 9A 00 6A 00 6A 11 EB 16 C4 83 00 44 D8 B4 -- 04E520
83 D8 74 3E C5 2E 00 54 C8 1C 9A 04 C4 83 00 44 -- 04E530
46 C7 05 74 00 3D 83 D8 30 3E C5 2E 0F 75 00 3D -- 04E540
00 F6 7E 83 00 00 05 C7 D9 32 3E C5 2E 00 00 F6 -- 04E550
00 FE 7E 83 24 74 00 3D 83 D8 74 3E C5 2E 33 74 -- 04E560
```

350

```
6C 3E C5 2E 19 75 00 3D 83 D8 30 3E C5 2E 1E 75 -- 04E570
05 74 00 3D 83 D8 30 3E C5 2E 0A 75 00 3D 83 D8 -- 04E580
B8 0F 75 00 3D 83 D8 30 3E C5 2E 00 34 C9 B3 9A -- 04E590
C5 2E 02 C4 83 00 4C C3 85 9A 50 FA 46 89 00 02 -- 04E5A0
D9 60 36 FF 2E 50 F8 46 8D 16 16 05 C6 D9 5E 3E -- 04E5B0
2E 0E C4 83 00 64 40 D0 9A 6E 6A 05 6A 01 6A 57 -- 04E5C0
49 9A 50 F8 46 8D 16 1A 74 00 3D 83 D8 30 3E C5 -- 04E5D0
00 64 12 4F 9A 50 F8 46 8D 16 04 C4 83 00 64 13 -- 04E5E0
08 C8 57 56 CB 5E 5F C9 00 44 67 53 9A 04 C4 83 -- 04E5F0
83 09 74 02 0A 7E 83 00 00 FE 46 C7 00 00 01 FE -- 04E600
00 3D 83 D8 88 3E C5 2E 01 D6 E9 03 74 03 0A 7E -- 04E610
8B 00 DB E9 03 75 00 3D 83 D9 32 3E C5 2E 0D 75 -- 04E620
3D 83 D8 88 3E C5 2E 05 89 D9 5A 3E C5 2E 0A 46 -- 04E630

00 02 B8 50 FE 46 8D 16 00 34 CA F3 9A 05 74 00 -- 04E640
40 D0 9A 01 91 68 03 6A 50 05 89 D8 9C 3E C5 2E -- 04E650
8D 16 00 01 05 C7 D9 2A 3E C5 2E 0A C4 83 00 64 -- 04E660
C4 83 00 64 40 D0 9A 6F 6A 03 6A 15 6A 50 FE 46 -- 04E670
46 8D 16 5E 75 00 01 3D 05 8B D8 80 3E C5 2E 0A -- 04E680
D9 36 36 FF 2E D9 38 36 FF 2E 00 6A 00 6A 50 FE -- 04E690
2E D8 1A 36 FF 2E D8 84 36 FF 2E D8 86 36 FF 2E -- 04E6A0
83 00 44 D8 B4 9A 50 FC 46 89 C0 2B D8 18 36 FF -- 04E6B0
2A 3E C5 2E 32 74 00 3D 83 D9 66 3E C5 2E 16 C4 -- 04E6C0
6A 00 6A 04 05 C6 D9 6E 3E C5 2E 00 01 05 C7 D9 -- 04E6D0
D9 26 3E C5 2E 0E EB 04 C4 83 00 44 5A 4B 9A 00 -- 04E6E0
C5 2E 00 54 C8 1C 9A 00 44 57 C9 9A 00 00 05 C7 -- 04E6F0
83 D8 30 3E C5 2E 00 E4 E9 00 00 05 C7 D9 5A 3E -- 04E700
9A 6F 6A 03 6A 35 6A 50 FE 46 8D 16 4C 74 00 3D -- 04E710
75 00 3D 83 D8 6C 3E C5 2E 0A C4 83 00 64 40 D0 -- 04E720
68 03 6A 35 FF D8 8C 3E C5 2E 50 FE 46 8D 16 19 -- 04E730
83 D8 50 3E C5 2E 0A C4 83 00 64 40 D0 9A 01 F6 -- 04E740
00 4C 03 F3 9A 05 EB 00 4C 02 61 9A 07 74 00 3D -- 04E750
50 05 89 D8 9C 3E C5 2E 00 02 B8 50 FE 46 8D 16 -- 04E760
C4 A1 9A 0A C4 83 00 64 40 D0 9A 01 91 68 03 6A -- 04E770
8D 16 3E 75 00 01 3D 05 8B D9 72 3E C5 2E 00 34 -- 04E780
36 FF 2E D9 7A 36 FF 2E D9 7C 36 FF 2E 50 FE 46 -- 04E790
76 36 FF 2E D9 78 36 FF 2E D9 7A 36 FF 2E D9 7C -- 04E7A0
46 89 00 01 B8 D8 18 36 FF 2E D8 1A 36 FF 2E D9 -- 04E7B0
2A 3E C5 2E 22 EB 16 C4 83 00 44 D8 B4 9A 50 FC -- 04E7C0
6A 00 6A 04 05 C6 D9 6E 3E C5 2E 00 01 05 C7 D9 -- 04E7D0
C5 2E 00 54 C8 1C 9A 04 C4 83 00 44 5A 4B 9A 00 -- 04E7E0
00 3D 83 D8 30 3E C5 2E 12 74 00 3D 83 D8 6C 3E -- 04E7F0
74 3E C5 2E 16 05 C6 D9 2E 3E C5 2E 08 74 01 FE -- 04E800
D8 90 3E C5 2E 50 FE 46 8D 16 19 75 00 3D 83 D8 -- 04E810
2E 0A C4 83 00 64 40 D0 9A 01 F6 68 03 6A 35 FF -- 04E820
2B 50 F8 46 89 C0 2B 14 74 00 3D 83 D8 D0 3E C5 -- 04E830
3E C5 2E 04 C4 83 00 44 19 4B 9A 50 FA 46 89 C0 -- 04E840
D8 86 36 FF 2E 00 6A 27 75 00 01 3D 05 8B D8 80 -- 04E850
9A D8 18 36 FF 2E D8 1A 36 FF 2E D8 84 36 FF 2E -- 04E860
00 00 05 C7 D8 80 3E C5 2E 0A C4 83 00 5C 94 FB -- 04E870
00 05 C6 D9 62 3E C5 2E 00 05 C6 D9 6E 3E C5 2E -- 04E880
D9 66 3E C5 2E C0 2B 00 00 05 C7 D9 26 3E C5 2E -- 04E890
05 89 D9 5A 3E C5 2E 05 89 D9 52 3E C5 2E 05 89 -- 04E8A0
C5 2E 05 89 D8 88 3E C5 2E 05 89 D9 32 3E C5 2E -- 04E8B0
C5 2E EC 8B 55 57 56 CB 5E 5F C9 05 89 D8 10 3E -- 04E8C0
83 00 34 D5 16 9A 03 6A 0A 74 00 3D 83 D8 10 3E -- 04E8D0
12 9A 03 6A 0A 74 00 3D 83 D9 1A 3E C5 2E 02 C4 -- 04E8E0
22 F2 00 6C 22 E6 CB 5E 5F C9 02 C4 83 00 44 83 -- 04E8F0
95 62 00 3C 95 0E 00 3C 86 F6 00 3C 86 A2 00 6C -- 04E900
91 4C 00 6C 23 DE 00 6C 23 6A 00 6C 23 66 00 3C -- 04E910
```

```
23 E0 3F E0 00 00 00 00 00 00 00 3C 93 EE 00 3C -- 04E920
B3 2A 00 3C 91 12 00 3C B3 14 00 6C 22 C8 00 6C -- 04E930
C2 8F 00 3C B3 28 00 3C B4 2A 00 3C B3 16 00 3C -- 04E940
90 C2 00 3C 92 86 00 3C 96 D0 3F FA 8F 5C 28 F5 -- 04E950
22 F6 00 6C 22 F4 00 3C 91 10 00 3C 90 36 00 3C -- 04E960
96 1A 00 3C 96 CC 00 3C 96 CE 00 6C 22 E8 00 6C -- 04E970
23 2E 00 6C 23 2C 00 3C 96 CA 00 6C 1D 4C 00 3C -- 04E980
93 CA 00 6C 23 40 00 6C 1D 5C 00 3C 96 2A 00 6C -- 04E990
23 CE 00 6C 23 8E 00 6C 23 7E 00 6C 23 6E 00 3C -- 04E9A0
96 5A 00 6C 2B F8 00 6C 2B FA 00 3C 94 DB 00 6C -- 04E9B0
00 1C 00 3C 95 DA 00 3C 92 D2 00 3C 6E 86 00 3C -- 04E9C0
02 DF 00 3C 95 E6 03 FF 00 3C 95 DE 00 3C 95 E2 -- 04E9D0

AD 2D CB 14 00 3C 96 C2 00 3C 96 BA 00 3C 95 EA -- 04E9E0
00 6C 23 BE 00 6C 23 AE 00 6C 23 9E 3F F6 84 86 -- 04E9F0
AE EC 00 6C 23 64 00 3C AE 54 00 6C 23 C6 01 FE -- 04EA00
22 EC 00 3C 93 BE 00 6C 27 C4 00 3C AE 5A 00 3C -- 04EA10
92 F0 00 3C 90 BC 00 3C AE C6 00 6C 23 08 00 6C -- 04EA20
22 EE 00 3C 96 3A 00 6C 28 74 00 3C 92 F4 00 3C -- 04EA30
92 C1 00 3C 91 18 00 6C 22 EA 00 3C 93 0C 00 6C -- 04EA40
96 5E 00 3C 90 71 00 6C 1C 06 00 6C 22 F0 00 3C -- 04EA50
00 00 02 C8 57 56 00 3C 96 72 00 3C 96 60 00 3C -- 04EA60
2E 37 74 00 3D 83 FD C6 3E C5 2E 00 00 FE 46 C7 -- 04EA70
3E C5 2E 05 89 FD CA 3E C5 2E 05 8B FD CE 3E C5 -- 04EA80
02 B8 50 FE 46 8D 16 1D 75 00 03 3D 05 8B FD CE -- 04EA90
C4 83 00 64 40 D0 9A 01 91 68 03 6A 50 05 89 00 -- 04EAA0
02 C8 57 56 CB 5E 5F C9 C0 2B 02 EB 00 01 B8 0A -- 04EAB0
74 00 3D 83 FD C6 3E C5 2E 00 00 FE 46 C7 00 00 -- 04EAC0
2E 05 89 FD CA 3E C5 2E 05 8B FD CE 3E C5 2E 37 -- 04EAD0
50 FE 46 8D 16 1D 74 00 03 3D 05 8B FD CE 3E C5 -- 04EAE0
00 64 40 D0 9A 01 91 68 03 6A 50 05 89 00 03 B8 -- 04EAF0
57 56 CB 5E 5F C9 C0 2B 02 EB 00 01 B8 0A C4 83 -- 04EB00
3D 83 FD C6 3E C5 2E 00 00 FE 46 C7 00 00 02 C8 -- 04EB10
89 FD CE 3E C5 2E 05 8B FD CA 3E C5 2E 3C 74 00 -- 04EB20
46 8D 16 0E 75 00 03 3D 05 8B FD CA 3E C5 2E 05 -- 04EB30
50 FE 46 8D 16 07 EB 35 FF FD CE 3E C5 2E 50 FE -- 04EB40
C9 0A C4 83 00 64 40 D0 9A 01 91 68 03 6A 02 6A -- 04EB50
76 C4 00 02 FE 46 C7 00 00 1A C8 57 56 CB 5E 5F -- 04EB60
C4 83 00 5C ED A7 9A 50 14 6C F7 26 FE 46 8B 0E -- 04EB70
6C F7 26 FE 46 8B 0E 76 C4 1D D9 9B 0A 7E C5 02 -- 04EB80
5D D9 9B 0A 7E C5 02 C4 83 00 5C ED A7 9A 50 16 -- 04EB90
46 8B 0E 7E C5 EE 5E DD 9B FD D2 06 DF 2E 9B 08 -- 04EBA0
5E DD 9B 02 C4 83 00 5C ED A7 9A 50 10 6D F7 FE -- 04EBB0
9A EE 5E DC 9B F6 46 DC 9B 05 D9 9B 0A 7E C5 F6 -- 04EBC0
50 10 6D F7 FE 46 8B 0E 7E C5 22 73 00 5C ED 94 -- 04EBD0
9B 0A 7E C5 E6 5E DD 9B 02 C4 83 00 5C ED A7 9A -- 04EBE0
7E C5 FD D2 06 DF 2E 9B 06 EB E6 46 DC 9B 05 D9 -- 04EBF0
5E DD 9B FD D4 06 DF 2E 9B 04 5D D9 9B 0A 01 FE -- 04EC00
00 5C ED A7 9A 50 12 6D F7 FE 46 8B 0E 7E C5 EE -- 04EC10
DC 9B 08 45 D9 9B 0A 7E C5 F6 5E DD 9B 02 C4 83 -- 04EC20
0E 7E C5 23 73 00 5C ED 94 9A EE 5E DC 9B F6 46 -- 04EC30
9B 02 C4 83 00 5C ED A7 9A 50 12 6D F7 FE 46 8B -- 04EC40
06 EB E6 46 DC 9B 08 45 D9 9B 0A 7E C5 E6 5E DD -- 04EC50
5F C9 9B 0C 5D D9 9B 0A 7E C5 FD D4 06 DF 2E 9B -- 04EC60
7E C5 52 45 D9 9B 0E 7E C5 EC 8B 55 57 56 CB 5E -- 04EC70
D9 9B 0A 7E C5 56 45 D9 9B 0E 7E C5 1D D9 9B 0A -- 04EC80
44 D8 26 9B 52 45 D9 9B 0E 7E C5 0E 76 C4 08 5D -- 04EC90
9B 56 45 D9 9B 0E 7E C5 04 5D D9 9B 0A 7E C5 5A -- 04ECA0
CB 5E 5F C9 9B 0C 5D D9 9B 0A 7E C5 5E 44 D8 26 -- 04ECB0
9B 0A 7E C5 6A 45 D9 9B 0E 7E C5 EC 8B 55 57 56 -- 04ECC0
```

```
08 5D D9 9B 0A 7E C5 6E 45 D9 9B 0E 7E C5 1D D9 -- 04ECD0
C5 72 44 D8 26 9B 6A 45 D9 9B 0E 7E C5 0E 76 C4 -- 04ECE0
D8 26 9B 6E 45 D9 9B 0E 7E C5 04 5D D9 9B 0A 7E -- 04ECF0
57 56 CB 5E 5F C9 9B 0C 5D D9 9B 0A 7E C5 76 44 -- 04ED00
2E 04 E0 C1 05 8B FD D6 3E C5 2E 10 6A EC 8B 55 -- 04ED10
76 FF 0C 76 FF 50 52 FD DC 16 8B 2E FD DA 06 03 -- 04ED20
55 57 56 CB 5E 5F C9 0A C4 83 00 5C ED 6E 9A 0A -- 04ED30
03 2E 04 E0 C1 05 8B FD DE 3E C5 2E 10 6A EC 8B -- 04ED40
0A 76 FF 0C 76 FF 50 52 FD E4 16 8B 2E FD E2 06 -- 04ED50
8B 55 57 56 CB 5E 5F C9 0A C4 83 00 5C ED 6E 9A -- 04ED60
5D D9 9B EE D9 9B 1D D9 9B 0A 7E C5 EE D9 9B EC -- 04ED70

C5 04 5D D9 9B 0A 7E C5 44 45 D9 9B 0E 7E C5 08 -- 04ED80
5F C9 9B 0C 5D D9 9B 0A 7E C5 48 45 D9 9B 0E 7E -- 04ED90
7E C5 54 45 D9 9B 0E 7E C5 EC 8B 55 57 56 CB 5E -- 04EDA0
D9 9B 0A 7E C5 58 45 D9 9B 0E 7E C5 1D D9 9B 0A -- 04EDB0
44 D8 26 9B 54 45 D9 9B 0E 7E C5 0E 76 C4 08 5D -- 04EDC0
9B 58 45 D9 9B 0E 7E C5 04 5D D9 9B 0A 7E C5 5C -- 04EDD0
CB 5E 5F C9 9B 0C 5D D9 9B 0A 7E C5 60 44 D8 26 -- 04EDE0
76 FF 0C 76 FF 50 F0 46 8D 16 00 00 10 C8 57 56 -- 04EDF0
9A F0 46 D9 9B 08 C4 83 00 4C 08 63 9A 0A 01 FE -- 04EE00
89 0E 7E C5 08 C4 83 00 5C ED F9 9A 00 5C ED 99 -- 04EE10
00 5C ED F9 9A 00 5C ED 99 9A F8 46 D9 9B 14 45 -- 04EE20
66 D8 9B F4 46 D9 9B 16 45 89 0E 7E C5 08 C4 83 -- 04EE30
7E C5 08 C4 83 00 5C ED F9 9A 00 5C ED 99 9A F0 -- 04EE40
5C ED 99 9A F8 66 D8 9B FC 46 D9 9B 10 45 89 0E -- 04EE50
9B 12 45 89 0E 7E C5 08 C4 00 00 18 C8 57 56 CB 5E 5F C9 -- 04EE60
0A 7E C5 0A 76 C4 00 00 18 C8 57 56 CB 5E 5F C9 -- 04EE70
0C 45 D9 9B FC 5E D9 9B 24 D8 26 9B 04 45 D9 9B -- 04EE80
9B 0E 7E C5 0E 76 C4 F8 5E D9 9B 08 64 D8 26 9B -- 04EE90
9B 0C 45 D9 9B F4 5E D9 9B 24 D8 26 9B 04 45 D9 -- 04EEA0
C4 E8 5E D9 9B 05 D9 9B F0 5E D9 9B 08 64 D8 26 -- 04EEB0
FC 76 D8 9B 24 D8 26 9B 05 D9 9B 12 7E C5 0A 76 -- 04EEC0
7E C5 1D D9 9B 16 7E C5 E8 46 D8 9B F4 4E D8 9B -- 04EED0
04 45 D9 9B 12 7E C5 E8 5E D9 9B 08 45 D9 9B 0E -- 04EEE0
46 D8 9B F0 4E D8 9B F8 76 D8 9B 08 64 D8 26 9B -- 04EEF0
55 57 56 CB 5E 5F C9 9B 04 5D D9 9B 16 7E C5 E8 -- 04EF00
89 FD E6 3E F7 2E 99 05 8B 05 FF 0A 7E C5 EC 8B -- 04EF10
5E 5F C9 05 FF 02 7D 00 05 3D 05 8B 0E 7E C5 15 -- 04EF20
2E 99 00 04 05 05 8B 0A 7E C5 EC 8B 55 57 56 CB -- 04EF30
56 CB 5E 5F C9 0D FF 0E 7E C5 15 89 FD E6 3E F7 -- 04EF40
26 9B 05 D9 9B 0E 7E C5 16 76 C4 00 00 20 C8 57 -- 04EF50
9B 08 64 D8 26 9B 08 45 D9 9B F0 5E D9 9B 24 D8 -- 04EF60
D9 9B 24 D8 26 9B 04 45 D9 9B 0E 76 C4 F4 5E D9 -- 04EF70
C4 F8 5E D9 9B 08 64 D8 26 9B 0C 45 D9 9B FC 5E -- 04EF80
5E DD 9B 24 D8 26 9B 04 45 D9 9B 16 7E C5 16 76 -- 04EF90
9B 24 D8 26 9B 04 45 D9 9B 12 7E C5 12 76 C4 E0 -- 04EFA0
9B E8 4E DC 9B F0 46 D9 9B E8 5E DD 9B E0 76 DC -- 04EFB0
1D D9 9B 0A 7E C5 E0 46 DC 9B 05 D9 9B E0 5E DD -- 04EFC0
9B 12 7E C5 E0 5E DD 9B E8 4E DC 9B F4 46 D9 9B -- 04EFD0
D9 9B 08 5D D9 9B 0A 7E C5 E0 46 DC 9B 08 45 D9 -- 04EFE0
46 DC 9B 05 D9 9B E0 5E DD 9B E8 4E DC 9B FC 46 -- 04EFF0
9B E8 4E DC 9B F8 46 D9 9B 04 5D D9 9B E0 01 FE -- 04F000
9B 0C 5D D9 9B E0 46 DC 9B 08 45 D9 9B E0 5E DD -- 04F010
2E FD EC 36 C4 2E 00 00 04 C8 57 56 CB 5E 5F C9 -- 04F020
C5 FC 5E D9 9B 24 D8 26 9B 05 D9 9B FD E8 3E C5 -- 04F030
0A 7E C5 FC 76 D8 9B 24 D8 26 9B 05 D9 9B 0E 7E -- 04F040
9B 08 45 D9 9B 0E 7E C5 FD F0 36 C4 2E 1D D9 9B -- 04F050
C4 2E 08 5D D9 9B 0A 7E C5 FC 76 D8 9B 24 D8 26 -- 04F060
D8 9B 24 D8 26 9B 04 45 D9 9B 0E 7E C5 FD EC 36 -- 04F070
```

```
7E  C5  FD  F0  36  C4  2E  04  5D  D9  9B  0A  7E  C5  FC  76  --  04F080
0A  7E  C5  FC  76  D8  9B  24  D8  26  9B  0C  45  D9  9B  0E  --  04F090
C4  00  00  38  C8  57  56  CB  5E  5F  C9  9B  0C  5D  D9  9B  --  04F0A0
5E  D9  9B  24  D8  26  9B  04  45  D9  9B  0E  7E  C5  0E  76  --  04F0B0
D9  9B  F8  5E  D9  9B  08  64  D8  26  9B  0C  45  D9  9B  FC  --  04F0C0
5E  DD  9B  E8  D9  9B  F4  5E  D9  9B  F8  76  D8  9B  FC  46  --  04F0D0
DD  9B  FD  D2  06  DF  2E  9B  E0  5E  DD  9B  EE  D9  9B  C8  --  04F0E0
5E  DC  9B  E8  66  DC  9B  04  45  D9  9B  0A  7E  C5  E8  5E  --  04F0F0
DD  9B  FD  D2  06  DF  2E  9B  17  76  00  5C  ED  94  9A  E0  --  04F100
9B  18  EB  D8  66  DC  9B  04  45  D9  9B  0A  7E  C5  D8  5E  --  04F110

04  45  D9  9B  0A  7E  C5  D0  5E  DD  9B  FD  D2  06  DF  2E  --  04F120
00  5C  ED  94  9A  C8  5E  DC  9B  E0  D9  9B  D0  66  DC  9B  --  04F130
24  D8  26  9B  04  45  D9  9B  0A  7E  C5  0A  76  C4  24  73  --  04F140
F0  46  D8  9B  08  45  D9  9B  F0  5E  D9  9B  F4  76  D8  9B  --  04F150
0C  45  D9  9B  0A  7E  C5  0A  76  C4  22  EB  0C  5D  D9  9B  --  04F160
05  D9  9B  F0  5E  D9  9B  F4  4E  D8  9B  08  64  D8  26  9B  --  04F170
C8  57  56  CB  5E  5F  C9  9B  04  5D  D9  9B  F0  46  D8  9B  --  04F180
0A  76  C4  E8  5E  D9  9B  05  D9  9B  12  7E  C5  00  00  18  --  04F190
C4  F0  5E  DD  9B  24  D8  26  9B  04  45  D9  9B  0A  7E  C5  --  04F1A0
5E  DD  9B  24  D8  26  9B  04  45  D9  9B  12  7E  C5  12  76  --  04F1B0
DC  9B  24  D8  26  9B  05  D9  9B  0E  7E  C5  0A  76  C4  F8  --  04F1C0
1D  D9  9B  16  7E  C5  E8  46  D8  9B  F0  76  DC  9B  F8  4E  --  04F1D0
D9  9B  0A  7E  C5  E8  5E  D9  9B  08  45  D9  9B  12  7E  C5  --  04F1E0
7E  C5  12  76  C4  F0  5E  DD  9B  08  64  D8  26  9B  0C  45  --  04F1F0
F8  5E  DD  9B  08  64  D8  26  9B  0C  45  D9  9B  12  01  FE  --  04F200
9B  08  64  D8  26  9B  08  45  D9  9B  0E  7E  C5  0A  76  C4  --  04F210
D9  9B  16  7E  C5  E8  46  D8  9B  F0  76  DC  9B  F8  4E  DC  --  04F220
DF  2E  9B  00  00  10  C8  57  56  CB  5E  5F  C9  9B  04  5D  --  04F230
DC  9B  72  45  D9  9B  0E  7E  C5  F0  5E  DD  9B  FD  F4  06  --  04F240
7E  C5  F8  46  DC  9B  6A  45  D9  9B  F8  5E  DD  9B  F0  76  --  04F250
7E  C5  F0  5E  DD  9B  FD  F4  06  DF  2E  9B  1D  D9  9B  0A  --  04F260
45  D9  9B  F8  5E  DD  9B  F0  76  DC  9B  76  45  D9  9B  0E  --  04F270
5E  5F  C9  9B  04  5D  D9  9B  0A  7E  C5  F8  46  DC  9B  6E  --  04F280
00  03  3D  05  8B  FD  CE  3E  C5  2E  EC  8B  55  57  56  CB  --  04F290
E2  3E  03  2E  04  E7  C1  3D  8B  FD  DE  3E  C5  2E  33  75  --  04F2A0
2E  1D  D9  9B  0A  7E  C5  05  D9  9B  FD  E4  1E  8E  2E  FD  --  04F2B0
8E  2E  FD  E2  3E  03  2E  04  E7  C1  3D  8B  FD  DE  3E  C5  --  04F2C0
2E  04  E7  C1  3D  8B  FD  D6  3E  C5  2E  31  EB  FD  E4  1E  --  04F2D0
9B  0A  7E  C5  05  D9  9B  FD  DC  1E  8E  2E  FD  DA  3E  03  --  04F2E0
DA  3E  03  2E  04  E7  C1  3D  8B  FD  D6  3E  C5  2E  1D  D9  --  04F2F0
5D  D9  9B  0A  7E  C5  08  45  D9  9B  FD  DC  1E  8E  2E  FD  --  04F300
C5  0E  76  C4  00  00  18  C8  57  56  CB  5E  5F  C9  9B  04  --  04F310
D9  9B  FC  5E  D9  9B  24  D8  26  9B  04  45  D9  9B  0E  7E  --  04F320
7E  C5  12  76  C4  F8  5E  D9  9B  08  64  D8  26  9B  0C  45  --  04F330
45  D9  9B  F4  5E  D9  9B  24  D8  26  9B  04  45  D9  9B  12  --  04F340
5E  DD  9B  EE  D9  9B  F0  5E  D9  9B  08  64  D8  26  9B  0C  --  04F350
00  5C  ED  94  9A  E8  5E  DC  9B  05  D9  9B  0E  7E  C5  E8  --  04F360
D9  9B  05  D9  9B  0E  7E  C5  0B  74  00  16  7E  83  2E  73  --  04F370
EE  D9  9B  6A  5D  D9  9B  0A  7E  C5  EE  D9  9B  03  EB  E0  --  04F380
0D  EB  04  5D  D9  9B  FC  46  D9  9B  1D  D9  9B  0E  7E  C5  --  04F390
12  76  C4  6A  5D  D9  9B  0A  7E  C5  05  D9  9B  0E  7E  C5  --  04F3A0
5D  D9  9B  0A  7E  C5  04  D8  26  9B  05  D9  9B  0E  7E  C5  --  04F3B0
9B  08  45  D9  9B  0E  7E  C5  E8  5E  DD  9B  EE  D9  9B  52  --  04F3C0
0C  74  00  16  7E  83  30  73  00  5C  ED  94  9A  E8  5E  DC  --  04F3D0
C5  EE  D9  9B  03  EB  E0  D9  9B  08  45  D9  9B  0E  7E  C5  --  04F3E0
08  5D  D9  9B  0E  7E  C5  EE  D9  9B  6E  5D  D9  9B  0A  7E  --  04F3F0
9B  0E  7E  C5  0E  EB  0C  5D  D9  9B  F8  46  D9  9B  01  FE  --  04F400
0E  7E  C5  12  76  C4  6E  5D  D9  9B  0A  7E  C5  08  45  D9  --  04F410
56  5D  D9  9B  0A  7E  C5  08  44  D8  26  9B  08  45  D9  9B  --  04F420
```

354

```
04 5C D8 26 9B FC 46 D8 9B 6A 45 D9 9B 0E 76 C4 -- 04F430
45 D9 9B 0E 7E C5 0A 76 C4 11 76 00 5C ED 94 9A -- 04F440
9B 0A 7E C5 FC 46 D9 9B 04 EB 6A 64 D8 26 9B 04 -- 04F450
D9 9B 04 45 D9 9B 12 7E C5 72 5D D9 9B 5A 55 D9 -- 04F460
44 D8 26 9B 52 45 D9 9B 0A 7E C5 0A 76 C4 E8 5E -- 04F470
C5 0A 76 C4 1A 76 00 5C ED 94 9A E8 5E D8 9B 5A -- 04F480
D9 9B 0A 7E C5 52 64 D8 26 9B 04 45 D9 9B 12 7E -- 04F490
6E 45 D9 9B 0A 7E C5 0E 76 C4 72 5D D9 9B 5A 55 -- 04F4A0
11 76 00 5C ED 94 9A 0C 5C D8 26 9B F8 46 D8 9B -- 04F4B0

EB 6E 64 D8 26 9B 0C 45 D9 9B 0E 7E C5 0A 76 C4 -- 04F4C0
76 5D D9 9B 5E 55 D9 9B 0A 7E C5 F8 46 D9 9B 04 -- 04F4D0
7E C5 0A 76 C4 E8 5E D9 9B 0C 45 D9 9B 12 7E C5 -- 04F4E0
94 9A E8 5E D8 9B 5E 44 D8 26 9B 56 45 D9 9B 0A -- 04F4F0
9B 0C 45 D9 9B 12 7E C5 0A 76 C4 1A 76 00 5C ED -- 04F500
9B 76 5D D9 9B 5E 55 D9 9B 0A 7E C5 56 64 D8 26 -- 04F510
6A 45 D9 9B 0E 7E C5 EC 8B 55 57 56 CB 5E 5F C9 -- 04F520
45 D9 9B 0E 7E C5 12 76 C4 6C 5D D9 9B 0A 7E C5 -- 04F530
9B 0E 7E C5 54 5D D9 9B 0A 7E C5 04 D8 26 9B 6A -- 04F540
45 D9 9B 0E 7E C5 70 5D D9 9B 0A 7E C5 6E 45 D9 -- 04F550
0E 7E C5 58 5D D9 9B 0A 7E C5 08 44 D8 26 9B 6E -- 04F560
C5 74 5D D9 9B 5C 55 D9 9B 0A 7E C5 72 45 D9 9B -- 04F570
5D D9 9B 60 55 D9 9B 0A 7E C5 76 45 D9 9B 0E 7E -- 04F580
D9 9B 0E 7E C5 EC 8B 55 57 56 CB 5E 5F C9 9B 78 -- 04F590
9B 0E 7E C5 16 76 C4 6C 5D D9 9B 0A 7E C5 6A 45 -- 04F5A0
7E C5 08 77 00 5C ED 94 9A 1C D8 26 9B 52 45 D9 -- 04F5B0
6A 45 D9 9B 0E 7E C5 12 76 C4 0E EB 05 D9 9B 12 -- 04F5C0
D9 9B 0E 7E C5 54 5D D9 9B 0A 7E C5 04 D8 26 9B -- 04F5D0
9B 0E 7E C5 16 76 C4 70 5D D9 9B 0A 7E C5 6E 45 -- 04F5E0
C5 09 77 00 5C ED 94 9A 08 5C D8 26 9B 56 45 D9 -- 04F5F0
0E 7E C5 12 76 C4 0F EB 08 45 D9 9B 12 7E 01 FE -- 04F600
58 5D D9 9B 0A 7E C5 08 44 D8 26 9B 6E 45 D9 9B -- 04F610
D9 9B 5C 55 D9 9B 0A 7E C5 72 45 D9 9B 0E 7E C5 -- 04F620
60 55 D9 9B 0A 7E C5 76 45 D9 9B 0E 7E C5 74 5D -- 04F630
76 C4 EC 8B 55 57 56 CB 5E 5F C9 9B 78 5D D9 9B -- 04F640
00 5C ED 94 9A 1C D8 26 9B 05 D9 9B 0A 7E C5 0E -- 04F650
76 C4 1D D9 9B 0A 7E C5 05 D9 9B 0E 7E C5 0C 73 -- 04F660
ED 94 9A 08 5C D8 26 9B 08 45 D9 9B 0A 7E C5 0E -- 04F670
D9 9B 0A 7E C5 08 45 D9 9B 0E 7E C5 0E 73 00 5C -- 04F680
5C D8 26 9B 04 45 D9 9B 0A 7E C5 0E 76 C4 08 5D -- 04F690
C5 04 45 D9 9B 0E 7E C5 0E 76 00 5C ED 94 9A 04 -- 04F6A0
0C 45 D9 9B 0A 7E C5 0E 76 C4 04 5D D9 9B 0A 7E -- 04F6B0
9B 0E 7E C5 0E 76 00 5C ED 94 9A 0C 5C D8 26 9B -- 04F6C0
56 CB 5E 5F C9 9B 0C 5D D9 9B 0A 7E C5 0C 45 D9 -- 04F6D0
9B 04 45 D9 9B 0A 7E C5 0A 76 C4 00 00 14 C8 57 -- 04F6E0
08 64 D8 26 9B 0C 45 D9 9B F8 5E D9 9B 24 D8 26 -- 04F6F0
FC 5E D9 9B F4 76 D8 9B F8 46 D9 9B F4 5E D9 9B -- 04F700
9B 2F 73 00 5C ED 94 9A 0E 5E DC 9B FC 46 D9 9B -- 04F710
DD 9B EE D9 9B F8 5E D9 9B 0E 4E DC 9B F4 46 D9 -- 04F720
5C ED 94 9A EC 5E DC 9B 05 D9 9B 0A 7E C5 EC 5E -- 04F730
D9 9B 2F EB 1D D9 9B 0A 7E C5 EE D9 9B 3A 73 00 -- 04F740
5E DD 9B EE D9 9B F4 5E D9 9B 0E 76 DC 9B F8 46 -- 04F750
5C ED 94 9A EC 5E DC 9B 08 45 D9 9B 0A 7E C5 EC -- 04F760
0A 7E C5 08 5D D9 9B 0A 7E C5 EE D9 9B 0A 73 00 -- 04F770
9B 08 45 D9 9B 04 5D D9 9B F8 46 D8 9B 05 D9 9B -- 04F780
18 C8 57 56 CB 5E 5F C9 9B 0C 5D D9 9B F4 46 D8 -- 04F790
7E C5 1D D9 9B 0A 7E C5 05 D9 9B 0E 7E C5 00 00 -- 04F7A0
9B E8 D9 9B 08 5D D9 9B 0A 7E C5 08 45 D9 9B 0E -- 04F7B0
12 7E C5 16 76 C4 F0 5E DD 9B EE D9 9B E8 5E DD -- 04F7C0
ED 94 9A F0 5E DC 9B 04 64 D8 26 9B 04 45 D9 9B -- 04F7D0
```

355

```
26  9B  04  45  D9  9B  12  7E  C5  16  76  C4  11  76  00  5C  --  04F7E0
9B  04  45  D9  9B  12  7E  C5  16  76  C4  12  EB  04  64  D8  --  04F7F0
ED  94  9A  E8  5E  DC  9B  E0  D9  9B  04  64  D8  26  01  FE  --  04F800
D9  9B  16  7E  C5  04  45  D9  9B  12  7E  C5  41  73  00  5C  --  04F810
DD  9B  08  64  D8  26  9B  0C  45  D9  9B  16  76  C4  04  5D  --  04F820
7E  C5  F0  76  DC  9B  24  D8  26  9B  04  45  D9  9B  F0  5E  --  04F830
26  9B  04  45  D9  9B  0E  7E  C5  0E  76  C4  1D  DD  9B  1A  --  04F840
9B  EE  D9  9B  E8  5E  DD  9B  E8  D9  9B  00  E3  E9  24  D8  --  04F850

D8  26  9B  0C  45  D9  9B  12  7E  C5  16  76  C4  F0  5E  DD  --  04F860
16  76  C4  11  76  00  5C  ED  94  9A  F0  5E  DC  9B  0C  64  --  04F870
76  C4  12  EB  0C  64  D8  26  9B  0C  45  D9  9B  12  7E  C5  --  04F880
E0  D9  9B  0C  64  D8  26  9B  0C  45  D9  9B  12  7E  C5  16  --  04F890
D9  9B  12  7E  C5  53  73  00  5C  ED  94  9A  E8  5E  DC  9B  --  04F8A0
0C  45  D9  9B  16  76  C4  0C  5D  D9  9B  16  7E  C5  0C  45  --  04F8B0
D8  26  9B  04  45  D9  9B  F0  5E  DD  9B  08  64  D8  26  9B  --  04F8C0
7E  C5  0E  76  C4  1D  DD  9B  1A  7E  C5  F0  76  DC  9B  24  --  04F8D0
7E  C5  F8  5E  D9  9B  08  64  D8  26  9B  0C  45  D9  9B  0E  --  04F8E0
76  C4  4C  EB  FC  5E  D9  9B  0D  DC  9B  F8  46  D9  9B  1A  --  04F8F0
E8  5E  DD  9B  24  D8  26  9B  04  45  D9  9B  12  7E  C5  12  --  04F900
DD  9B  24  D8  26  9B  04  45  D9  9B  16  7E  C5  16  76  C4  --  04F910
24  D8  26  9B  04  45  D9  9B  0E  7E  C5  0E  76  C4  F0  5E  --  04F920
9B  1A  7E  C5  FC  5E  D9  9B  E8  76  DC  9B  F0  4E  DC  9B  --  04F930
05  D9  9B  0A  7E  C5  F8  5E  D9  9B  35  DC  9B  FC  46  D9  --  04F940
F8  46  D8  9B  08  45  D9  9B  04  5D  D9  9B  FC  46  D8  9B  --  04F950
2E  00  00  0E  C8  57  56  CB  5E  5F  C9  9B  0C  5D  D9  9B  --  04F960
05  EB  00  01  FA  46  C7  07  74  00  3D  83  FD  F6  3E  C5  --  04F970
9B  62  45  D9  9B  0E  7E  C5  0E  76  C4  00  02  FA  46  C7  --  04F980
D9  9B  0E  7E  C5  09  76  00  5C  ED  94  9A  66  5C  D8  26  --  04F990
C4  FC  5E  D9  9B  66  45  D9  9B  0E  7E  C5  07  EB  62  45  --  04F9A0
4E  DE  9B  24  D8  26  9B  04  45  D9  9B  16  7E  C5  16  76  --  04F9B0
9B  12  7E  C5  12  76  C4  F2  5E  DD  9B  FC  4E  D8  9B  FA  --  04F9C0
D9  9B  0A  7E  C5  F2  76  DC  9B  24  D8  26  9B  04  45  D9  --  04F9D0
08  64  D8  26  9B  0C  45  D9  9B  16  7E  C5  16  76  C4  1D  --  04F9E0
C5  12  76  C4  F2  5E  DD  9B  FC  4E  D8  9B  FA  4E  DE  9B  --  04F9F0
76  DC  9B  08  64  D8  26  9B  0C  45  D9  9B  12  7E  01  FE  --  04FA00
C8  57  56  CB  5E  5F  C9  9B  04  5D  D9  9B  0A  7E  C5  F2  --  04FA10
FA  46  C7  07  74  00  3D  83  FD  F6  3E  C5  2E  00  00  0E  --  04FA20
9B  1A  7E  C5  1A  76  C4  00  02  FA  46  C7  05  EB  00  01  --  04FA30
C5  09  76  00  5C  ED  94  9A  66  5C  D8  26  9B  62  45  D9  --  04FA40
9B  66  45  D9  9B  1A  7E  C5  07  EB  62  45  D9  9B  1A  7E  --  04FA50
9B  FA  4E  DE  9B  0A  4E  D8  9B  FC  46  D9  9B  FC  5E  D9  --  04FA60
D8  26  9B  04  45  D9  9B  1E  7E  C5  1E  76  C4  F2  5E  DD  --  04FA70
9B  FC  46  D9  9B  1D  D9  9B  12  7E  C5  F2  76  DC  9B  24  --  04FA80
D9  9B  1E  7E  C5  F2  5E  DD  9B  FA  4E  DE  9B  0E  4E  D8  --  04FA90
D9  9B  16  7E  C5  F2  76  DC  9B  08  64  D8  26  9B  0C  45  --  04FAA0
C5  1E  46  DD  9B  EC  8B  55  57  56  CB  5E  5F  C9  9B  1D  --  04FAB0
05  D9  9B  08  5D  D9  9B  26  46  DD  9B  1D  D9  9B  0A  7E  --  04FAC0
16  46  DC  9B  08  45  D9  9B  04  5D  D9  9B  0E  46  DC  9B  --  04FAD0
C5  00  00  10  C8  57  56  CB  5E  5F  C9  9B  0C  5D  D9  9B  --  04FAE0
73  00  5C  ED  94  9A  0E  5E  DC  9B  04  45  D9  9B  22  7E  --  04FAF0
D9  9B  0E  46  DD  9B  1D  D9  9B  0A  7E  C5  EE  D9  9B  14  --  04FB00
9B  F0  5E  DD  9B  FD  F4  06  DF  2E  9B  00  96  E9  04  5D  --  04FB10
D9  9B  1E  7E  C5  F8  5E  DD  9B  F0  76  DC  9B  0E  46  DD  --  04FB20
C5  EE  D9  9B  0F  73  00  5C  ED  94  9A  F8  5E  DC  9B  05  --  04FB30
F4  06  DF  2E  9B  2D  EB  0E  46  DD  9B  1D  D9  9B  0A  7E  --  04FB40
5E  DD  9B  F0  76  DC  9B  0E  46  DD  9B  F0  5E  DD  9B  FD  --  04FB50
D9  9B  0A  7E  C5  F8  66  DC  9B  05  D9  9B  1E  7E  C5  F8  --  04FB60
C5  22  76  C4  04  5D  D9  9B  0E  46  DC  9B  05  D9  9B  1D  --  04FB70
00  5C  ED  94  9A  04  5C  D8  26  9B  04  45  D9  9B  0A  7E  --  04FB80
```

356

```
04  5D  D9  9B  0A  7E  C5  04  45  D9  9B  22  7E  C5  19  76  --  04FB90
D9  9B  22  7E  C5  1D  D9  9B  0E  66  DC  9B  04  45  D9  9B  --  04FBA0
EE  D9  9B  15  73  00  5C  ED  94  9A  16  5E  DC  9B  0C  45  --  04FBB0
E9  0C  5D  D9  9B  16  46  DD  9B  08  5D  D9  9B  0A  7E  C5  --  04FBC0
16  46  DD  9B  F0  5E  DD  9B  FD  F4  06  DF  2E  9B  00  9C  --  04FBD0
9B  04  45  D9  9B  1E  7E  C5  F8  5E  DD  9B  F0  76  DC  9B  --  04FBE0
0A  7E  C5  EE  D9  9B  10  73  00  5C  ED  94  9A  F8  5E  DC  --  04FBF0

06  DF  2E  9B  30  EB  16  46  DD  9B  08  5D  D9  9B  01  FE  --  04FC00
DD  9B  F0  76  DC  9B  16  46  DD  9B  F0  5E  DD  9B  FD  F4  --  04FC10
0A  7E  C5  F8  66  DC  9B  04  45  D9  9B  1E  7E  C5  F8  5E  --  04FC20
0C  5D  D9  9B  16  46  DC  9B  08  45  D9  9B  08  5D  D9  9B  --  04FC30
9A  0C  5C  D8  26  9B  0C  45  D9  9B  0A  7E  C5  22  76  C4  --  04FC40
0A  7E  C5  0C  45  D9  9B  22  7E  C5  1A  76  00  5C  ED  94  --  04FC50
08  5D  D9  9B  16  66  DC  9B  0C  45  D9  9B  0C  5D  D9  9B  --  04FC60
FA  06  DD  2E  9B  00  00  10  C8  57  56  CB  5E  5F  C9  9B  --  04FC70
FF  12  76  FF  14  76  FF  F0  5E  D9  9B  F4  56  D9  9B  FD  --  04FC80
83  50  FC  46  8D  16  50  F8  46  8D  16  0E  76  FF  10  76  --  04FC90
50  00  08  05  C4  8B  16  50  F0  46  8D  16  08  6A  08  EC  --  04FCA0
18  C4  83  00  34  E9  21  9A  0A  C4  83  00  5C  ED  6E  9A  --  04FCB0
F8  46  D9  9B  0A  76  FF  0C  76  FF  16  76  FF  18  76  FF  --  04FCC0
76  FF  00  5C  ED  99  9A  FC  46  D9  9B  00  5C  ED  99  9A  --  04FCD0
5E  5F  C9  9B  1C  C4  83  00  34  E9  ED  9A  1A  76  FF  1C  --  04FCE0
02  3E  C5  2E  FE  06  36  C4  2E  00  00  30  C8  57  56  CB  --  04FCF0
D6  3E  C5  2E  D0  5E  DD  9B  24  D8  26  9B  05  D9  9B  FE  --  04FD00
FD  DC  06  8E  2E  FD  DA  36  03  2E  04  E6  C1  35  8B  FD  --  04FD10
9B  FD  DC  1E  8E  2E  FD  DA  3E  03  2E  04  E7  C1  3D  8B  --  04FD20
2E  E8  5E  DD  9B  D0  76  DC  9B  24  D8  26  9B  04  45  D9  --  04FD30
24  D8  26  9B  05  D9  9B  FE  0A  3E  C5  2E  FE  0E  36  C4  --  04FD40
03  2E  04  E6  C1  35  8B  FD  DE  3E  C5  2E  D0  5E  DD  9B  --  04FD50
3E  03  2E  04  E7  C1  3D  8B  FD  E4  06  8E  2E  FD  E2  36  --  04FD60
9B  24  D8  26  9B  04  45  D9  9B  FD  E4  1E  8E  2E  FD  E2  --  04FD70
3E  C5  2E  25  75  02  1A  7E  83  E0  5E  DD  9B  D0  76  DC  --  04FD80
3E  C5  2E  F8  5E  D9  9B  E8  4E  DC  9B  05  D9  9B  FE  06  --  04FD90
E8  D9  9B  FC  5E  D9  9B  E8  4E  DC  9B  05  D9  9B  FE  12  --  04FDA0
05  D9  9B  FE  0E  3E  C5  2E  2C  75  03  1A  7E  83  2E  EB  --  04FDB0
05  D9  9B  FE  16  3E  C5  2E  F8  5E  D9  9B  E8  4E  DC  9B  --  04FDC0
E8  76  DC  9B  E0  46  DD  9B  FC  5E  D9  9B  E8  4E  DC  9B  --  04FDD0
DC  9B  25  D8  9B  F8  46  D9  9B  12  7E  C5  D8  5E  DD  9B  --  04FDE0
D9  9B  D0  66  DC  9B  F8  46  D9  9B  D0  5E  DD  9B  0A  76  --  04FDF0
9B  FC  46  D9  9B  F0  5E  D9  9B  D8  4E  DC  9B  E0  01  FE  --  04FE00
9B  FC  46  D9  9B  D0  5E  DD  9B  0A  76  DC  9B  04  65  D8  --  04FE10
76  FF  F4  5E  D9  9B  D8  4E  DC  9B  E0  D9  9B  D0  66  DC  --  04FE20
C4  83  00  4C  0A  D5  9A  50  F0  46  8D  16  16  76  FF  18  --  04FE30
9B  24  D8  26  9B  04  45  D9  9B  16  7E  C5  16  76  C4  08  --  04FE40
D9  9B  D0  46  DC  9B  05  D9  9B  D0  5E  DD  9B  0A  76  DC  --  04FE50
9B  0A  76  DC  9B  08  64  D8  26  9B  0C  45  D9  9B  04  5D  --  04FE60
9B  0C  5D  D9  9B  D0  46  DC  9B  08  45  D9  9B  D0  5E  DD  --  04FE70
FF  50  F8  46  8D  16  00  00  08  C8  57  56  CB  5E  5F  C9  --  04FE80
10  76  FF  08  C4  83  00  34  EE  EE  9A  0A  76  FF  0C  76  --  04FE90
3D  9A  50  F8  46  8D  16  12  76  FF  14  76  FF  0E  76  FF  --  04FEA0
00  00  10  C8  57  56  CB  5E  5F  C9  0C  C4  83  00  4C  0A  --  04FEB0
46  8D  16  00  BC  E9  03  75  00  3D  83  FD  C6  3E  C5  2E  --  04FEC0
8B  FD  CE  3E  C5  2E  04  C4  83  00  34  EE  9B  9A  50  F0  --  04FED0
35  74  00  3D  83  FE  1A  3E  C5  2E  61  75  00  03  3D  05  --  04FEE0
2E  FD  E2  06  03  2E  04  E0  C1  05  8B  FD  DE  3E  C5  2E  --  04FEF0
FD  EC  36  FF  2E  FD  EE  36  FF  2E  50  52  FD  E4  16  8B  --  04FF00
00  34  DE  5F  9A  0A  76  FF  0C  76  FF  50  F0  46  8D  16  --  04FF10
2E  04  E0  C1  05  8B  FD  DE  3E  C5  2E  72  EB  10  C4  83  --  04FF20
FE  10  36  FF  2E  50  52  FD  E4  16  8B  2E  FD  E2  06  03  --  04FF30
```

```
74 00 3D 83 FE 1A 3E C5 2E C9 EB FE 0E 36 FF 2E -- 04FF40
FD DA 06 03 2E 04 E0 C1 05 8B FD D6 3E C5 2E 16 -- 04FF50
E0 C1 05 8B FD D6 3E C5 2E 9D EB FD DC 16 8B 2E -- 04FF60
36 FF 2E 50 52 FD DC 16 8B 2E FD DA 06 03 2E 04 -- 04FF70
9A 0A 76 FF 0C 76 FF 87 EB FE 06 36 FF 2E FE 08 -- 04FF80
EC 8B 55 57 56 CB 5E 5F C9 04 C4 83 00 2C 0D B5 -- 04FF90

8B FD CE 3E C5 2E 32 74 00 3D 83 FD C6 3E C5 2E -- 04FFA0
FE 1E 36 FF 2E FE 20 36 FF 2E 1A 75 00 03 3D 05 -- 04FFB0
1A EB 08 C4 83 00 34 DB D2 9A 0A 76 FF 0C 76 FF -- 04FFC0
FF 0C 76 FF E4 EB FE 22 36 FF 2E FE 24 36 FF 2E -- 04FFD0
57 56 CB 5E 5F C9 04 C4 83 00 2C 0B B3 9A 0A 76 -- 04FFE0
76 FF 16 75 00 3D 83 FD C6 3E C5 2E 00 00 20 C8 -- 04FFF0
2C 07 19 9A 0A 76 FF 0C 76 FF 0E 76 FF 10 01 FE -- 050000
00 34 ED BA 9A 50 F0 46 8D 16 38 EB 08 C4 83 00 -- 050010
04 C4 83 00 34 EE 9B 9A 50 E0 46 8D 16 04 C4 83 -- 050020
E0 46 8D 16 0A 76 FF 0C 76 FF 0E 76 FF 10 76 FF -- 050030
5F C9 10 C4 83 00 34 DD 84 9A 50 F0 46 8D 16 50 -- 050040
3E C5 2E 00 00 FE 46 C7 00 00 22 C8 57 56 CB 5E -- 050050
0C 76 FF 0E 76 FF 10 76 FF 16 75 00 3D 83 FD C6 -- 050060
46 8D 16 38 EB 08 C4 83 00 2C 08 A9 9A 0A 76 FF -- 050070
9A 50 DE 46 8D 16 04 C4 83 00 34 ED BA 9A 50 EE -- 050080
0C 76 FF 0E 76 FF 10 76 FF 04 C4 83 00 34 EE 9B -- 050090
DD 84 9A 50 DE 46 8D 16 50 EE 46 8D 16 0A 76 FF -- 0500A0
2E 00 00 02 C8 57 56 CB 5E 5F C9 10 C4 83 00 34 -- 0500B0
FF 0C 76 FF 0E 76 FF 13 75 00 3D 83 FD C6 3E C5 -- 0500C0
CE 3E C5 2E 76 EB 06 C4 83 00 2C 21 11 9A 0A 76 -- 0500D0
36 FF 2E FE 28 36 FF 2E 2A 75 00 03 3D 05 8B FD -- 0500E0
E2 06 03 2E 04 E0 C1 05 8B FD DE 3E C5 2E FE 26 -- 0500F0
08 C4 83 00 34 F3 63 9A 50 52 FD E4 16 8B 2E FD -- 050100
00 02 05 C7 FE 46 89 05 8B FD CE 3E C5 2E 40 EB -- 050110
8B FD D6 3E C5 2E FE 2A 36 FF 2E FE 2C 36 FF 2E -- 050120
50 52 FD DC 16 8B 2E FD DA 06 03 2E 04 E0 C1 05 -- 050130
FD CE 3E C5 2E FE 46 8B 08 C4 83 00 34 F3 63 9A -- 050140
C6 3E C5 2E 00 00 02 C8 57 56 CB 5E 5F C9 05 89 -- 050150
2C 17 F9 9A 0A 76 FF 0C 76 FF 10 75 00 3D 83 FD -- 050160
FF FF 3D 05 8B FE 2E 3E C5 2E 66 EB 04 C4 83 00 -- 050170
32 3E C5 2E FE 46 89 05 8B FD CE 3E C5 2E 5A 74 -- 050180
C7 04 74 00 03 3D 05 89 FD CE 3E C5 2E 05 8B FE -- 050190
06 03 2E 04 E0 C1 05 8B FE 2E 3E C5 2E 00 02 05 -- 0501A0
03 2E 04 E0 C1 05 8B 50 52 FE 3C 16 8B 2E FE 3A -- 0501B0
83 00 34 F3 63 9A 50 52 FE 38 16 8B 2E FE 36 06 -- 0501C0
CB 5E 5F C9 05 89 FD CE 3E C5 2E FE 46 8B 08 C4 -- 0501D0
FF 10 75 00 3D 83 FD C6 3E C5 2E EC 8B 55 57 56 -- 0501E0
9A 05 EB 04 C4 83 00 2C 18 D0 9A 0A 76 FF 0C 76 -- 0501F0
00 00 02 C8 57 56 CB 5E 5F C9 00 34 EF B7 01 FE -- 050200
FD EC 3E C5 2E FE 3E 06 DD 2E 9B 00 00 FE 46 C7 -- 050210
D9 9B FD F0 3E C5 2E FE 3E 06 DD 2E 9B 1D D9 9B -- 050220
9B 1D D9 9B FD E8 3E C5 2E FE 46 06 DD 2E 9B 1D -- 050230
EE D9 9B 1D D9 9B FE 4E 3E C5 2E FE 52 06 DD 2E -- 050240
FE 5E 3E C5 2E EE D9 9B 1D D9 9B FE 5A 3E C5 2E -- 050250
D9 9B 1D D9 9B FE 62 3E C5 2E E8 D9 9B 1D D9 9B -- 050260
16 1D D9 9B FE 66 3E C5 2E FE 6A 36 DC 2E 9B E8 -- 050270
2E FE 60 36 FF 2E 57 FE 68 36 FF 2E 50 FE 46 8D -- 050280
FF 2E FE 62 36 FF 2E FE 64 36 FF 2E FE 5E 36 FF -- 050290
40 D0 9A 01 94 68 0A 6A FE 5A 36 FF 2E FE 5C 36 -- 0502A0
2E FE 50 36 FF 2E 50 FE 46 8D 16 18 C4 83 00 64 -- 0502B0
FF 2E FD F0 36 FF 2E FD F2 36 FF 2E FE 4E 36 FF -- 0502C0
36 FF 2E FD EE 36 FF 2E FD E8 36 FF 2E FD EA 36 -- 0502D0
9B 18 C4 83 00 64 40 D0 9A 01 95 68 0A 6A FD EC -- 0502E0
```

EP 0 533 348 A2

```
6A  00  00  BE  46  C7  00  00  4A  C8  57  56  CB  5E  5F  C9  --  0502F0
50  C0  46  8D  16  FE  72  36  FF  2E  FE  74  36  FF  2E  10  --  050300
99  9A  FE  6A  06  DD  2E  9B  0A  C4  83  00  5C  ED  6E  9A  --  050310
0C  C4  83  00  34  E5  E7  9A  50  C0  46  8D  16  00  5C  ED  --  050320
CC  46  D9  9B  F8  5E  DD  9B  C0  66  D8  9B  C4  46  D9  9B  --  050330

D9  9B  0E  7E  C5  0E  76  C4  F0  5E  DD  9B  C8  66  D8  9B  --  050340
26  9B  0C  45  D9  9B  E8  5E  DD  9B  24  D8  26  9B  04  45  --  050350
D9  9B  F8  76  DC  9B  05  D9  9B  E0  5E  DD  9B  08  64  D8  --  050360
DD  9B  D8  5E  D9  9B  F8  76  DC  9B  08  45  D9  9B  D0  5E  --  050370
DC  9B  D0  46  D9  9B  B6  5E  DD  9B  F8  76  DC  9B  E8  46  --  050380
2E  9B  F0  76  DC  9B  E0  46  DD  9B  D4  5E  D9  9B  B6  46  --  050390
B6  46  DC  9B  D8  46  D9  9B  B6  5E  DD  9B  FE  6A  36  DC  --  0503A0
9A  0A  76  FF  0C  76  FF  50  D0  46  8D  16  DC  5E  D9  9B  --  0503B0
FF  0C  76  FF  50  BE  46  8D  16  08  C4  83  00  34  DF  B7  --  0503C0
9B  0C  C4  83  00  2C  05  F8  9A  50  D0  46  8D  16  0A  76  --  0503D0
05  8B  FD  CE  3E  C5  2E  EC  8B  55  57  56  CB  5E  5F  C9  --  0503E0
0C  76  FF  0E  76  FF  10  76  FF  05  89  FE  32  3E  C5  2E  --  0503F0
3E  C5  2E  08  C4  83  00  34  F3  63  9A  0A  76  FF  01  FE  --  050400
10  6A  15  89  FD  F4  3E  F7  2E  99  05  8B  05  FF  FE  2E  --  050410
FE  36  06  03  2E  04  E0  C1  05  8B  0A  76  FF  0C  76  FF  --  050420
6A  0A  C4  83  00  5C  ED  6E  9A  50  52  FE  38  16  8B  2E  --  050430
E0  C1  05  8B  FE  2E  3E  C5  2E  0E  76  FF  10  76  FF  10  --  050440
ED  6E  9A  50  52  FE  3C  16  8B  2E  FE  3A  06  03  2E  04  --  050450
C7  00  00  32  C8  57  56  CB  5E  5F  C9  0A  C4  83  00  5C  --  050460
26  9B  04  45  D9  9B  0A  7E  C5  0A  76  C4  00  00  FE  46  --  050470
9B  08  64  D8  26  9B  0C  45  D9  9B  FA  5E  D9  9B  24  D8  --  050480
D8  26  9B  0C  45  D9  9B  0E  7E  C5  0E  76  C4  F6  5E  D9  --  050490
DC  9B  24  D8  26  9B  04  45  D9  9B  E6  5E  DD  9B  08  64  --  0504A0
D9  9B  F6  76  D8  9B  FA  46  D9  9B  EE  5E  D9  9B  E6  76  --  0504B0
73  00  5C  ED  94  9A  F2  5E  D8  9B  EE  46  D9  9B  F2  5E  --  0504C0
0A  7E  C5  F6  5E  D9  9B  EE  76  D8  9B  FA  46  D9  9B  1D  --  0504D0
D9  9B  29  EB  0C  5D  D9  9B  F6  46  D8  9B  08  45  D9  9B  --  0504E0
46  D9  9B  1A  76  00  5C  ED  94  9A  F2  5E  D8  9B  EE  46  --  0504F0
9B  05  D9  9B  0A  7E  C5  FA  5E  D9  9B  EE  4E  D8  9B  F6  --  050500
CE  3E  C5  2E  50  FE  46  8D  16  04  5D  D9  9B  FA  46  D8  --  050510
0A  C4  83  00  64  40  D0  9A  01  91  68  03  6A  35  FF  FD  --  050520
FF  50  00  0C  05  0A  46  8B  0C  76  FF  50  FE  46  8D  16  --  050530
05  0A  46  8B  0C  76  FF  50  00  08  05  0A  46  8B  0C  76  --  050540
35  FF  FD  CE  3E  C5  2E  0A  76  FF  0C  76  FF  50  00  04  --  050550
EE  D9  9B  1A  C4  83  00  64  40  D0  9A  01  92  68  0B  6A  --  050560
94  9A  E6  5E  DC  9B  05  D9  9B  0E  7E  C5  E6  5E  DD  9B  --  050570
0E  7E  C5  09  EB  05  D9  9B  0E  7E  C5  08  76  00  5C  ED  --  050580
5C  ED  94  9A  FE  76  1E  DC  2E  9B  E0  D9  9B  05  D9  9B  --  050590
9B  EE  D9  9B  1D  D9  9B  0E  7E  C5  EE  D9  9B  09  73  00  --  0505A0
94  9A  E6  5E  DC  9B  08  45  D9  9B  0E  7E  C5  E6  5E  DD  --  0505B0
7E  C5  0A  EB  08  45  D9  9B  0E  7E  C5  09  76  00  5C  ED  --  0505C0
94  9A  FE  76  1E  DC  2E  9B  E0  D9  9B  08  45  D9  9B  0E  --  0505D0
9B  08  5D  D9  9B  0E  7E  C5  EE  D9  9B  0A  73  00  5C  ED  --  0505E0
0E  7E  C5  E6  5E  DD  9B  E8  D9  9B  DE  5E  DD  9B  EE  D9  --  0505F0
94  9A  DE  5E  DC  9B  E6  66  DC  9B  04  45  D9  9B  01  FE  --  050600
9B  0E  7E  C5  D6  5E  DD  9B  E8  D9  9B  14  76  00  5C  ED  --  050610
CE  5E  DD  9B  E8  D9  9B  15  EB  D6  66  DC  9B  04  45  D9  --  050620
2E  9B  E0  D9  9B  CE  66  DC  9B  04  45  D9  9B  0E  7E  C5  --  050630
7E  C5  E8  D9  9B  0A  73  00  5C  ED  94  9A  FE  76  1E  DC  --  050640
9B  E8  D9  9B  DE  5E  DD  9B  EE  D9  9B  04  5D  D9  9B  0E  --  050650
DC  9B  E6  66  DC  9B  0C  45  D9  9B  0E  7E  C5  E6  5E  DD  --  050660
D6  5E  DD  9B  E8  D9  9B  14  76  00  5C  ED  94  9A  DE  5E  --  050670
E8  D9  9B  15  EB  D6  66  DC  9B  0C  45  D9  9B  0E  7E  C5  --  050680
9B  CE  66  DC  9B  0C  45  D9  9B  0E  7E  C5  CE  5E  DD  9B  --  050690
```

359

```
9B  0A  73  00  5C  ED  94  9A  FE  76  1E  DC  2E  9B  E0  D9  --  0506A0
76  FF  50  FE  46  8D  16  0C  5D  D9  9B  0E  7E  C5  E8  D9  --  0506B0
08  05  0E  46  8B  10  76  FF  50  00  0C  05  0E  46  8B  10  --  0506C0
FF  10  76  FF  50  00  04  05  0E  46  8B  10  76  FF  50  00  --  0506D0

D0  9A  01  93  68  0B  6A  35  FF  FD  CE  3E  C5  2E  0E  76  --  0506E0
5C  74  00  3D  83  FE  7E  3E  C5  2E  1A  C4  83  00  64  40  --  0506F0
ED  99  9A  0C  45  D9  9B  0E  7E  C5  56  74  00  FE  7E  83  --  050700
7E  C5  00  5C  ED  99  9A  04  45  D9  9B  0E  7E  C5  00  5C  --  050710
05  D9  9B  0E  7E  C5  00  5C  ED  99  9A  08  45  D9  9B  0E  --  050720
2E  FE  86  36  FF  2E  FE  88  36  FF  2E  00  5C  ED  99  9A  --  050730
C4  83  00  5C  97  1E  9A  FE  82  36  FF  2E  FE  84  36  FF  --  050740
5E  5F  C9  9B  02  C4  83  00  64  59  FE  9A  FE  76  FF  28  --  050750
00  0A  7E  83  00  00  EE  46  C7  00  00  12  C8  57  56  CB  --  050760
8B  FD  D6  3E  C5  2E  10  6A  18  75  02  0A  7E  83  65  74  --  050770
1C  EB  FD  DC  16  8B  2E  FD  DA  06  03  2E  04  E0  C1  05  --  050780
C1  05  8B  FD  DE  3E  C5  2E  10  6A  25  75  03  0A  7E  83  --  050790
8D  16  50  52  FD  E4  16  8B  2E  FD  E2  06  03  2E  04  E0  --  0507A0
50  EE  46  8D  16  0A  C4  83  00  5C  ED  6E  9A  50  F0  46  --  0507B0
01  91  68  03  6A  50  05  89  FD  CE  3E  C5  2E  0A  46  8B  --  0507C0
16  0C  76  FF  0E  76  FF  10  6A  12  EB  00  64  40  D0  9A  --  0507D0
06  DD  2E  9B  0A  C4  83  00  5C  ED  6E  9A  50  F0  46  8D  --  0507E0
34  E5  E7  9A  50  F0  46  8D  16  00  5C  ED  99  9A  FE  6A  --  0507F0
FE  5A  36  FF  2E  FE  5C  36  FF  2E  0C  C4  83  00  01  FE  --  050800
0A  7E  83  08  C4  83  00  34  F3  63  9A  50  F0  46  8D  16  --  050810
50  F0  46  8D  16  10  6A  1D  75  02  0A  7E  83  4E  74  00  --  050820
2E  FD  DA  06  03  2E  04  E0  C1  05  8B  FD  D6  3E  C5  2E  --  050830
8D  16  10  6A  25  75  03  0A  7E  83  21  EB  FD  DC  16  8B  --  050840
06  03  2E  04  E0  C1  05  8B  FD  DE  3E  C5  2E  50  F0  46  --  050850
C4  83  00  5C  ED  6E  9A  50  52  FD  E4  16  8B  2E  FD  E2  --  050860
56  CB  5E  5F  C9  9B  00  01  05  C7  FE  1A  3E  C5  2E  0A  --  050870
2E  C0  2B  00  00  05  C7  FE  1A  3E  C5  2E  EC  8B  55  57  --  050880
36  FF  2E  05  89  FD  D6  3E  C5  2E  05  89  FE  8A  3E  C5  --  050890
2A  36  FF  2E  FE  2C  36  FF  2E  FE  06  36  FF  2E  FE  08  --  0508A0
2E  18  74  00  0E  7E  83  08  C4  83  00  34  DF  32  9A  FE  --  0508B0
9A  0A  76  FF  0C  76  FF  FE  2A  36  FF  2E  FE  2C  36  FF  --  0508C0
2E  0A  76  FF  0C  76  FF  10  6A  08  C4  83  00  34  F3  63  --  0508D0
8B  2E  FD  DA  06  03  2E  04  E0  C1  05  8B  FD  D6  3E  C5  --  0508E0
5E  5F  C9  0A  C4  83  00  5C  ED  6E  9A  50  52  FD  DC  16  --  0508F0
2B  00  00  05  C7  FE  1A  3E  C5  2E  EC  8B  55  57  56  CB  --  050900
2E  05  89  FD  DE  3E  C5  2E  05  89  FE  8E  3E  C5  2E  C0  --  050910
FF  2E  FE  28  36  FF  2E  FE  0E  36  FF  2E  FE  10  36  FF  --  050920
FE  28  36  FF  2E  08  C4  83  00  34  DF  32  9A  FE  26  36  --  050930
00  34  F3  63  9A  0A  76  FF  0C  76  FF  FE  26  36  FF  2E  --  050940
FD  DE  3E  C5  2E  0A  76  FF  0C  76  FF  10  6A  08  C4  83  --  050950
52  FD  E4  16  8B  2E  FD  E2  06  03  2E  04  E0  C1  05  8B  --  050960
C8  57  56  CB  5E  5F  C9  0A  C4  83  00  5C  ED  6E  9A  50  --  050970
01  12  7E  83  00  03  05  C7  FD  CE  3E  C5  2E  00  00  10  --  050980
9A  50  F0  46  8D  16  0A  76  FF  0C  76  FF  10  6A  15  75  --  050990
0E  76  FF  10  76  FF  12  76  FF  0A  C4  83  00  5C  ED  6E  --  0509A0
FE  1E  36  FF  2E  FE  20  36  FF  2E  0A  76  FF  0C  76  FF  --  0509B0
36  FF  2E  FE  28  36  FF  2E  0E  C4  83  00  34  E2  22  9A  --  0509C0
08  C4  83  00  34  F3  63  9A  0A  76  FF  0C  76  FF  FE  26  --  0509D0
0C  76  FF  50  F0  46  8D  16  10  6A  15  75  01  12  7E  83  --  0509E0
3E  C5  2E  C0  2B  0A  C4  83  00  5C  ED  6E  9A  0A  76  FF  --  0509F0
FF  10  6A  05  89  FD  DE  3E  C5  2E  05  89  FE  8E  01  FE  --  050A00
16  8B  2E  FD  E2  06  03  2E  04  E0  C1  0A  76  FF  0C  76  --  050A10
CB  5E  5F  C9  0A  C4  83  00  5C  ED  6E  9A  50  52  FD  E4  --  050A20
F8  5E  D9  9B  05  DF  9B  0A  7E  C5  00  00  0C  C8  57  56  --  050A30
36  FF  2E  FE  08  36  FF  2E  FC  5E  D9  9B  02  45  DF  9B  --  050A40
```

```
89 08 C4 83 00 4C 09 70 9A 50 F8 46 8D 16 FE 06 -- 050A50
3D 05 8B FD CE 3E C5 2E 3D 74 00 F6 7E 83 F6 46 -- 050A60
C7 FD CE 3E C5 2E 00 8F E9 00 02 B8 06 74 00 03 -- 050A70

46 8D 16 50 00 10 05 0A 46 8B 0C 76 FF 00 02 05 -- 050A80
C7 FD CE 3E C5 2E 08 C4 83 00 34 EE EE 9A 50 F8 -- 050A90
16 FE 0E 36 FF 2E FE 10 36 FF 2E CF EB 00 03 05 -- 050AA0
83 F6 46 89 08 C4 83 00 4C 09 70 9A 50 F8 46 8D -- 050AB0
75 00 03 3D 05 8B FD CE 3E C5 2E 42 74 00 F6 7E -- 050AC0
F4 46 89 05 8B FD CE 3E C5 2E 33 EB 00 03 B8 05 -- 050AD0
8D 16 50 00 10 05 0A 46 8B 0C 76 FF 00 03 05 C7 -- 050AE0
C5 2E F4 46 8B 08 C4 83 00 34 EE EE 9A 50 F8 46 -- 050AF0
57 56 CB 5E 5F C9 9B C0 2B CA EB 05 89 FD CE 3E -- 050B00
9B 05 DF 9B 0A 7E C5 00 00 FE 46 C7 00 00 1E C8 -- 050B10
FD CE 3E C5 2E F6 5E D9 9B 02 45 DF 9B F2 5E D9 -- 050B20
35 FF 50 FE 46 8D 16 00 02 05 C7 FC 46 89 05 8B -- 050B30
46 8D 16 0A C4 83 00 64 40 D0 9A 01 91 68 03 6A -- 050B40
2E 08 C4 83 00 34 EE EE 9A 50 F2 46 8D 16 50 EA -- 050B50
8B 2E FD DA 06 03 2E 04 E0 C1 05 8B FD D6 3E C5 -- 050B60
83 00 4C 09 70 9A 50 EA 46 8D 16 50 52 FD DC 16 -- 050B70
8D 16 00 8C E9 03 75 00 FA 7E 83 FA 46 89 08 C4 -- 050B80
36 FF 2E FE 92 36 FF 2E FE 94 36 FF 2E 50 FE 46 -- 050B90
64 40 D0 9A 03 EC 68 06 6A FE 22 36 FF 2E FE 24 -- 050BA0
76 FF 50 E2 46 8D 16 50 FE 46 8D 16 10 C4 83 00 -- 050BB0
C4 83 00 64 40 D0 9A 03 EE 68 06 6A 0A 76 FF 0C -- 050BC0
C5 E6 46 DB 9B 1D D9 9B 0E 7E C5 E2 46 DB 9B 10 -- 050BD0
C5 2E FC 46 8B 0C 75 04 FC 7E 83 1D D9 9B 12 7E -- 050BE0
2E FC 46 8B 50 FE 46 8D 16 1D EB 05 89 FD CE 3E -- 050BF0
D0 9A 01 91 68 03 6A 50 05 89 FD CE 3E C5 01 FE -- 050C00
CE 3E C5 2E 01 1A E9 00 02 B8 0A C4 83 00 64 40 -- 050C10
91 68 03 6A 35 FF 50 FE 46 8D 16 00 03 05 C7 FD -- 050C20
8D 16 50 EA 46 8D 16 0A C4 83 00 64 40 D0 9A 01 -- 050C30
FD DE 3E C5 2E 08 C4 83 00 34 EE EE 9A 50 F2 46 -- 050C40
52 FD E4 16 8B 2E FD E2 06 03 2E 04 E0 C1 05 8B -- 050C50
46 89 08 C4 83 00 4C 09 70 9A 50 EA 46 8D 16 50 -- 050C60
2E 50 FE 46 8D 16 00 8B E9 03 75 00 FA 7E 83 FA -- 050C70
FF 2E FE 20 36 FF 2E FE 96 36 FF 2E FE 98 36 FF -- 050C80
10 C4 83 00 64 40 D0 9A 03 EC 68 06 6A FE 1E 36 -- 050C90
0A 76 FF 0C 76 FF 50 E2 46 8D 16 50 FE 46 8D 16 -- 050CA0
46 DB 9B 10 C4 83 00 64 40 D0 9A 03 EE 68 06 6A -- 050CB0
D9 9B 12 7E C5 E6 46 DB 9B 1D D9 9B 0E 7E C5 E2 -- 050CC0
89 FD CE 3E C5 2E FC 46 8B 0C 75 04 FC 7E 83 1D -- 050CD0
FD CE 3E C5 2E FC 46 8B 50 FE 46 8D 16 1D EB 05 -- 050CE0
0A C4 83 00 64 40 D0 9A 01 91 68 03 6A 50 05 89 -- 050CF0
C5 2E FC 46 8B 0C 75 04 FC 7E 83 31 EB 00 03 B8 -- 050D00
2E FC 46 8B 50 FE 46 8D 16 1D EB 05 89 FD CE 3E -- 050D10
64 40 D0 9A 01 91 68 03 6A 50 05 89 FD CE 3E C5 -- 050D20
00 28 C8 57 56 CB 5E 5F C9 9B C0 2B 0A C4 83 00 -- 050D30
50 F0 46 8D 16 1C 75 00 3D 83 FD C6 3E C5 2E 00 -- 050D40
EE 9B 9A 50 E0 46 8D 16 04 C4 83 00 34 ED BA 9A -- 050D50
2E 10 6A 31 75 02 12 7E 83 7B EB 04 C4 83 00 34 -- 050D60
6E 9A 50 F0 46 8D 16 FE 06 36 FF 2E FE 08 36 FF -- 050D70
C1 05 8B FD D6 3E C5 2E 10 6A 0A C4 83 00 5C ED -- 050D80
7E 83 35 EB FD DC 16 8B 2E FD DA 06 03 2E 04 E0 -- 050D90
FE 0E 36 FF 2E FE 10 36 FF 2E 10 6A 3E 75 03 12 -- 050DA0
2E 10 6A 0A C4 83 00 5C ED 6E 9A 50 F0 46 8D 16 -- 050DB0
8B 2E FD E2 06 03 2E 04 E0 C1 05 8B FD DE 3E C5 -- 050DC0
83 00 5C ED 6E 9A 50 E0 46 8D 16 50 52 FD E4 16 -- 050DD0
E0 66 D8 9B E4 46 D9 9B 31 75 02 12 7E 83 0A C4 -- 050DE0
D8 4E DC 9B 05 D9 9B FE 9A 3E C5 2E D8 5E DD 9B -- 050DF0
```

```
E8 66 D8 9B EC 46 D9 9B 1D D9 9B 0A 7E C5 01 FE -- 050E00
75 03 12 7E 83 35 EB FE 9E 3E C5 2E D8 5E DD 9B -- 050E10

3E C5 2E D8 5E DD 9B E0 66 D8 9B E4 46 D9 9B 3C -- 050E20
9B 1D D9 9B 0A 7E C5 D8 4E DC 9B 05 D9 9B FE A2 -- 050E30
FE A6 3E C5 2E D8 5E DD 9B E8 66 D8 9B EC 46 D9 -- 050E40
E8 D9 9B 1D D9 9B 0E 7E C5 D8 4E DC 9B 05 D9 9B -- 050E50
9B F0 66 D8 9B F4 46 D9 9B 0A 76 C4 D8 5E DD 9B -- 050E60
E8 D9 9B 1D D9 9B 0A 7E C5 34 D8 26 9B D8 46 DC -- 050E70
9B F8 66 D8 9B FC 46 D9 9B 0E 76 C4 D8 5E DD 9B -- 050E80
3E C5 2E 1D D9 9B 0E 7E C5 34 D8 26 9B D8 46 DC -- 050E90
3D 83 FD F6 3E C5 2E 28 74 00 03 3D 05 8B FE AA -- 050EA0
9B FE AE 0E DC 2E 9B 05 D9 9B 0A 7E C5 1E 75 00 -- 050EB0
D9 9B FE AE 0E DC 2E 9B 05 D9 9B 0E 7E C5 1D D9 -- 050EC0
96 CA 00 6C 1D 74 00 3C AE 54 CB 5E 5F C9 9B 1D -- 050ED0
1D 6E 00 6C 1C AC 00 6C 1D 6C 02 DF 03 FF 00 3C -- 050EE0
00 6C 1D CA 00 6C 1D CE 00 05 00 6C 1C FC 00 6C -- 050EF0
00 00 00 00 00 00 00 3C B3 28 00 02 00 6C 1D D2 -- 050F00
95 EA 00 3C 95 EE 00 3C 95 DA 00 3C 95 DE 3F F0 -- 050F10
92 86 00 6C 1D 76 00 3C 95 F2 00 3C 95 E2 00 3C -- 050F20
1C AA 00 6C 1D 4C 00 6C 1D 5C 00 3C 90 36 00 3C -- 050F30
00 00 00 6C 1D 9A 00 6C 1D 7A 00 6C 1D 78 00 6C -- 050F40
1D D6 40 8F F8 00 00 00 00 00 40 3C 00 00 00 00 -- 050F50
1D C2 00 6C 1D BA 40 86 F8 00 00 00 00 00 00 6C -- 050F60
84 86 AD 2D CB 14 00 6C 1D C6 00 6C 1D BE 00 6C -- 050F70
AE 5C 3E B0 C6 F7 A0 B5 ED 8D 00 3C 95 FA 3F F6 -- 050F80
1D 72 00 6C 1D 70 00 6C 1C 97 00 6C 1C 84 00 3C -- 050F90
90 9C 00 3C 90 98 00 3C 93 CA 00 3C AE C6 00 6C -- 050FA0
00 00 00 3C B3 24 00 3C 92 EC 00 3C 92 E8 00 3C -- 050FB0
2E 0A 46 DD 00 00 28 C8 57 56 3F E0 00 00 00 00 -- 050FC0
FF AA 3E C5 2E 11 76 00 5C ED 94 9A FF A2 1E DC -- 050FD0
8D 16 F6 2B 00 C0 E9 FF AE 06 DD 2E 00 22 05 C7 -- 050FE0
00 5C EE AE 9A 00 5C ED 99 9A 0A 46 DD 50 E0 46 -- 050FF0
FF B6 1E DC 2E 0A 46 DD 0A 5E DD 0C C4 83 01 FE -- 051000
DC FF B6 06 DD 2E 00 01 BE 0E 76 00 5C ED 94 9A -- 051010
03 6A E8 5E DD 0A 4E DC 0A 46 DD 0A 5E DD 0A 6E -- 051020
64 54 B6 9A 00 5C ED 99 9A E8 46 DD FF C6 68 0E -- 051030
FF DE 68 0E 03 6A F8 5E DD 0A 4E DC 0E C4 83 00 -- 051040
0E C4 83 00 64 54 B6 9A 00 5C ED 99 9A E8 46 DD -- 051050
DC F0 46 DD D8 5E DD F8 66 DC F0 46 DD F0 5E DD -- 051060
BE 06 DD 2E 0B 74 F6 0B E8 5E DD D8 76 DC F8 46 -- 051070
9A 00 5C ED 99 9A E0 46 DD E8 5E DD E8 4E DC FF -- 051080
00 5C ED 99 9A E8 46 DD 50 08 C4 83 00 5C ED F9 -- 051090
C9 9B E8 46 DD E8 5E DD 0A C4 83 00 5C EE 7A 9A -- 0510A0
00 6C 34 08 40 5F C0 00 00 00 00 00 00 CB 5E 5F -- 0510B0
3F E0 00 00 00 00 00 00 47 9E 17 B8 43 57 69 1B -- 0510C0
40 97 A7 A0 8F EE 69 B8 3F F6 A0 9E 66 7F 3B CC -- 0510D0
3F 97 A5 C8 55 6E 17 B5 40 34 33 BA 93 13 EC 1B -- 0510E0
40 6D 25 E5 0F 5D 12 A8 40 B1 10 36 2F 87 4C A5 -- 0510F0
00 00 00 00 00 00 00 00 3F F0 00 00 00 00 00 00 -- 051100
72 6F 6C 6F 43 72 75 6F 74 6E 6F 43 42 41 00 00 -- 051110
41 00 31 73 75 6E 69 4D 74 73 6F 68 47 42 41 00 -- 051120
47 42 41 00 32 73 75 6E 69 4D 74 73 6F 68 47 42 -- 051130
6F 68 47 42 41 00 33 73 75 6E 69 4D 74 73 6F 68 -- 051140
50 74 73 6F 68 47 42 41 00 31 73 75 6C 50 74 73 -- 051150
73 75 6C 50 74 73 6F 68 47 42 41 00 32 73 75 6C -- 051160
68 47 4D 41 00 74 6E 69 6F 50 74 65 47 41 00 33 -- 051170
73 6F 68 47 4D 41 00 31 73 75 6E 69 4D 74 73 6F -- 051180
4D 74 73 6F 68 47 4D 41 00 32 73 75 6E 69 4D 74 -- 051190
75 6C 50 74 73 6F 68 47 4D 41 00 33 73 75 6E 69 -- 0511A0
```

362

```
            00 32 73 75 6C 50 74 73 6F 68 47 4D 41 00 31 73 -- 0511B0
6F 62 41 00 33 73 75 6C 50 74 73 6F 68 47 4D 41 -- 0511C0
62 41 00 6B 73 61 4D 79 74 69 73 6E 65 44 74 72 -- 0511D0
50 74 72 6F 62 41 00 79 6C 6F 50 57 4C 74 72 6F -- 0511E0
73 62 41 00 63 65 52 74 72 6F 62 41 00 79 6C 6F -- 0511F0
69 74 63 41 00 79 70 6F 43 65 74 75 6C 6F 01 FE -- 051200
74 61 76 69 74 63 41 00 79 70 6F 43 65 74 61 76 -- 051210
69 41 00 64 61 72 47 72 65 74 66 41 00 74 43 65 -- 051220
42 72 69 41 00 72 65 74 66 41 68 73 75 72 42 72 -- 051230
72 42 72 69 41 00 65 72 6F 66 65 42 68 73 75 72 -- 051240
72 42 72 69 41 00 66 66 4F 6F 66 6E 49 68 73 75 -- 051250
75 72 42 72 69 41 00 6E 4F 6F 66 6E 49 68 73 75 -- 051260
70 65 53 6C 6C 41 00 6B 73 61 4D 61 69 56 68 73 -- 051270
43 64 6E 75 6F 72 41 00 73 6E 6F 69 74 61 72 61 -- 051280
59 4C 46 74 73 69 4C 73 73 41 00 72 6F 73 72 75 -- 051290
4C 73 73 41 00 57 4C 74 73 69 4C 73 73 41 00 54 -- 0512A0
4E 6B 73 61 4D 73 73 41 00 6B 73 61 4D 74 73 69 -- 0512B0
6C 6C 41 72 65 6C 62 6D 65 73 73 41 00 65 6D 61 -- 0512C0
6C 6C 41 72 65 6C 62 6D 65 73 73 41 00 70 65 53 -- 0512D0
6C 62 6D 65 73 73 41 00 74 69 42 34 73 70 65 53 -- 0512E0
65 73 73 41 00 6B 63 61 6C 42 6D 6F 6F 5A 72 65 -- 0512F0
73 41 00 6E 61 79 43 6D 6F 6F 5A 72 65 6C 62 6D -- 051300
6E 65 67 61 4D 6D 6F 6F 5A 72 65 6C 62 6D 65 73 -- 051310
6D 6F 6F 5A 72 65 6C 62 6D 65 73 73 41 00 61 74 -- 051320
6F 72 46 6E 67 69 73 73 41 00 77 6F 6C 6C 65 59 -- 051330
72 69 41 74 41 00 6F 54 6E 67 69 73 73 41 00 6D -- 051340
6E 69 4D 74 73 6F 68 47 42 42 00 68 73 75 72 42 -- 051350
73 75 6E 69 4D 74 73 6F 68 47 42 42 00 31 73 75 -- 051360
00 33 73 75 6E 69 4D 74 73 6F 68 47 42 42 00 32 -- 051370
47 42 42 00 31 73 75 6C 50 74 73 6F 68 47 42 42 -- 051380
73 6F 68 47 42 42 00 32 73 75 6C 50 74 73 6F 68 -- 051390
74 73 65 44 74 75 43 4C 42 00 33 73 75 6C 50 74 -- 0513A0
42 00 31 73 75 6E 69 4D 74 73 6F 68 47 4D 42 00 -- 0513B0
47 4D 42 00 32 73 75 6E 69 4D 74 73 6F 68 47 4D -- 0513C0
6F 68 47 4D 42 00 33 73 75 6E 69 4D 74 73 6F 68 -- 0513D0
50 74 73 6F 68 47 4D 42 00 31 73 75 6C 50 74 73 -- 0513E0
73 75 6C 50 74 73 6F 68 47 4D 42 00 32 73 75 6C -- 0513F0
57 42 00 74 73 65 44 74 75 43 52 42 00 33 01 FE -- 051400
61 42 00 62 6F 4A 79 61 6C 70 73 69 44 74 69 61 -- 051410
76 6F 4D 65 73 61 42 00 6E 4F 6F 66 6E 49 65 73 -- 051420
65 42 00 65 7A 69 53 65 73 61 42 00 65 7A 69 53 -- 051430
6D 65 73 73 41 6C 42 00 64 61 72 47 65 72 6F 66 -- 051440
63 75 64 65 52 6B 63 61 6C 42 00 42 46 53 77 42 -- 051450
61 72 61 70 65 53 6B 63 61 6C 42 00 6E 6F 69 74 -- 051460
66 66 4F 65 64 6F 4D 65 75 6C 42 00 6E 6F 69 74 -- 051470
68 47 42 43 00 6E 4F 65 64 6F 4D 65 75 6C 42 00 -- 051480
73 6F 68 47 42 43 00 31 73 75 6E 69 4D 74 73 6F -- 051490
4D 74 73 6F 68 47 42 43 00 32 73 75 6E 69 4D 74 -- 0514A0
75 6C 50 74 73 6F 68 47 42 43 00 33 73 75 6E 69 -- 0514B0
00 32 73 75 6C 50 74 73 6F 68 47 42 43 00 31 73 -- 0514C0
47 4D 43 00 33 73 75 6C 50 74 73 6F 68 47 42 43 -- 0514D0
6F 68 47 4D 43 00 31 73 75 6E 69 4D 74 73 6F 68 -- 0514E0
74 73 6F 68 47 4D 43 00 32 73 75 6E 69 4D 74 73 -- 0514F0
6C 50 74 73 6F 68 47 4D 43 00 33 73 75 6E 69 4D -- 051500
32 73 75 6C 50 74 73 6F 68 47 4D 43 00 31 73 75 -- 051510
54 43 00 33 73 75 6C 50 74 73 6F 68 47 4D 43 00 -- 051520
6E 4F 6F 66 6E 49 54 43 00 66 66 4F 6F 66 6E 49 -- 051530
54 43 00 65 74 61 64 70 55 6F 66 6E 49 54 43 00 -- 051540
00 74 73 69 4C 54 43 00 6D 6F 6F 5A 6F 66 6E 49 -- 051550
```

363

```
50 6C 6C 61 43 00 73 74 69 6E 55 74 65 53 54 43 -- 051560
62 41 6C 65 63 6E 61 43 00 73 6D 65 74 73 79 73 -- 051570
72 42 72 69 41 6C 65 63 6E 61 43 00 64 61 72 47 -- 051580
6E 67 69 73 73 41 6C 65 63 6E 61 43 00 68 73 75 -- 051590
61 43 00 72 6F 43 6C 6F 43 6C 65 63 6E 61 43 00 -- 0515A0
75 43 6C 65 63 6E 61 43 00 72 6F 43 6C 65 63 6E -- 0515B0
61 43 00 74 73 6F 68 47 6C 65 63 6E 61 43 00 74 -- 0515C0
63 6E 61 43 00 6C 6C 41 64 61 72 47 6C 65 63 6E -- 0515D0
66 65 52 6C 65 63 6E 61 43 00 6B 73 61 4D 6C 65 -- 0515E0
66 66 4F 72 61 42 76 69 74 63 41 65 73 61 43 00 -- 0515F0
00 65 74 61 76 69 74 63 41 65 73 61 43 00 01 FE -- 051600
65 73 61 43 00 6B 73 61 4D 77 65 4E 65 73 61 43 -- 051610
6F 43 65 67 6E 61 68 43 00 65 73 61 42 66 65 52 -- 051620
67 6E 61 68 43 00 74 69 6E 55 72 61 42 72 6F 6C -- 051630
68 43 00 72 6F 6C 6F 43 72 75 6F 74 6E 6F 43 65 -- 051640
00 72 6F 6C 6F 43 72 6F 73 72 75 43 65 67 6E 61 -- 051650
70 61 68 53 72 6F 73 72 75 43 65 67 6E 61 68 43 -- 051660
53 74 61 4D 6B 73 6D 44 65 67 6E 61 68 43 00 65 -- 051670
6F 43 6B 73 61 4D 65 67 6E 61 68 43 00 65 7A 69 -- 051680
61 74 53 70 65 53 65 67 6E 61 68 43 00 72 6F 6C -- 051690
42 75 72 68 54 73 65 67 6E 61 68 43 00 73 75 74 -- 0516A0
70 73 6E 61 72 54 6B 63 65 68 43 00 68 73 75 72 -- 0516B0
70 61 72 47 65 73 6F 6F 68 43 00 74 6E 65 72 61 -- 0516C0
61 4D 72 63 6C 43 00 69 6F 41 72 63 6C 43 00 68 -- 0516D0
78 69 72 74 61 4D 72 63 6C 43 00 31 78 69 72 74 -- 0516E0
6C 43 00 35 78 69 72 74 61 4D 72 63 6C 43 00 33 -- 0516F0
61 4D 72 63 6C 43 00 37 78 69 72 74 61 4D 72 63 -- 051700
6F 43 00 74 6E 50 6C 63 6E 43 00 39 78 69 72 74 -- 051710
43 6C 6F 43 00 66 66 4F 6F 66 6E 49 72 6F 43 6C -- 051720
56 72 6F 43 6C 6F 43 00 6E 4F 6F 66 6E 49 72 6F -- 051730
4D 72 61 42 72 6F 6C 6F 43 00 6B 73 61 4D 61 69 -- 051740
66 4F 72 61 42 72 6F 6C 6F 43 00 79 66 69 64 6F -- 051750
6D 6F 43 00 6E 4F 72 61 42 72 6F 6C 6F 43 00 66 -- 051760
75 6E 69 74 6E 6F 43 00 50 74 6E 65 6D 65 6C 70 -- 051770
43 00 66 66 4F 6E 4F 72 75 6F 74 6E 6F 43 00 65 -- 051780
43 00 6F 54 79 70 6F 43 00 6D 6F 72 46 79 70 6F -- 051790
72 72 6F 43 00 61 65 72 41 5F 74 63 65 72 72 6F -- 0517A0
00 65 74 65 6C 65 44 66 65 52 6E 6F 69 74 63 65 -- 0517B0
69 64 45 66 65 52 6E 6F 69 74 63 65 72 72 6F 43 -- 0517C0
75 43 00 6B 73 61 4D 74 6E 65 72 72 75 43 00 74 -- 0517D0
00 65 75 6C 61 56 65 67 6E 61 52 74 6E 65 72 72 -- 0517E0
75 43 00 32 65 76 72 75 43 00 31 65 76 72 75 43 -- 0517F0
66 4F 6F 66 6E 49 74 75 43 00 33 65 76 72 01 FE -- 051800
49 74 75 43 00 6E 4F 6F 66 6E 49 74 75 43 00 66 -- 051810
65 73 73 41 79 43 00 65 74 61 64 70 55 6F 66 6E -- 051820
72 61 70 65 53 6E 61 79 43 00 42 46 53 77 42 6D -- 051830
73 61 72 45 68 73 75 72 42 44 00 6E 6F 69 74 61 -- 051840
43 65 74 61 76 69 74 63 61 65 44 00 6C 6C 41 65 -- 051850
74 63 65 72 72 6F 43 5F 73 6E 65 44 00 79 70 6F -- 051860
41 5F 77 65 4E 5F 73 6E 65 44 00 61 65 72 41 5F -- 051870
72 65 74 65 6D 6F 74 69 73 6E 65 44 00 61 65 72 -- 051880
00 6E 49 74 69 6D 69 4C 79 74 69 73 6E 65 44 00 -- 051890
00 74 75 4F 74 69 6D 69 4C 79 74 69 73 6E 65 44 -- 0518A0
44 00 30 78 69 72 74 61 4D 79 74 69 73 6E 65 44 -- 0518B0
65 44 00 31 78 69 72 74 61 4D 79 74 69 73 6E 65 -- 0518C0
6E 65 44 00 32 78 69 72 74 61 4D 79 74 69 73 6E -- 0518D0
73 6E 65 44 00 33 78 69 72 74 61 4D 79 74 69 73 -- 0518E0
42 70 73 69 44 00 74 69 6D 69 4C 6F 4E 79 74 69 -- 0518F0
```

```
6F 4D 65 73 61 42 70 73 69 44 00 74 43 65 73 61 -- 051900
69 44 00 74 75 4F 72 6F 46 70 73 69 44 00 65 76 -- 051910
79 61 6C 70 73 69 44 00 74 43 65 76 6F 4D 70 73 -- 051920
4D 72 74 6D 44 00 65 72 6F 66 65 42 72 63 6C 43 -- 051930
44 00 63 65 72 5F 77 61 72 44 00 79 66 69 64 6F -- 051940
00 31 65 67 64 45 00 68 73 75 72 42 72 69 41 74 -- 051950
65 67 64 45 00 33 65 67 64 45 00 32 65 67 64 45 -- 051960
65 44 65 67 64 45 00 66 66 4F 74 63 65 74 65 44 -- 051970
46 62 75 53 42 41 64 6E 45 00 6E 4F 74 63 65 74 -- 051980
42 75 72 68 54 64 6E 45 00 6E 6F 69 74 63 6E 75 -- 051990
72 45 00 6C 6C 41 65 73 61 72 45 00 68 73 75 72 -- 0519A0
62 41 6E 49 68 70 61 72 47 64 61 72 47 65 73 61 -- 0519B0
74 69 78 45 00 54 43 65 67 6E 61 68 63 78 45 00 -- 0519C0
45 00 65 64 6F 4D 74 73 6F 68 47 74 69 78 45 00 -- 0519D0
45 00 65 64 6F 4D 68 63 74 61 72 63 53 74 69 78 -- 0519E0
78 45 00 72 61 42 6C 61 69 63 65 70 53 74 69 78 -- 0519F0
00 6E 65 65 72 63 53 74 69 6C 70 53 74 69 01 FE -- 051A00
74 75 43 64 6E 69 46 00 57 4C 6F 54 74 69 78 45 -- 051A10
41 64 61 72 47 64 6E 69 46 00 72 65 6E 72 6F 43 -- 051A20
6F 50 74 69 6D 69 4C 74 73 72 69 46 00 61 65 72 -- 051A30
6C 6C 75 46 79 61 6C 70 73 69 44 47 00 74 6E 69 -- 051A40
44 65 76 6F 4D 47 00 65 6D 61 4E 74 65 47 47 00 -- 051A50
4D 47 00 74 66 65 4C 65 76 6F 4D 47 00 6E 77 6F -- 051A60
70 55 65 76 6F 4D 47 00 74 68 67 69 52 65 76 6F -- 051A70
00 65 63 61 6C 50 47 00 72 61 42 66 66 4F 47 00 -- 051A80
72 61 74 53 47 00 74 43 68 73 65 72 66 65 52 47 -- 051A90
6D 6F 6F 5A 47 00 4D 4F 4F 5A 47 00 72 61 42 74 -- 051AA0
6F 50 74 75 43 74 73 31 74 65 47 00 6B 63 61 42 -- 051AB0
69 6F 50 74 75 43 64 6E 32 74 65 47 00 74 6E 69 -- 051AC0
43 74 65 47 00 65 76 72 75 43 74 65 47 00 74 6E -- 051AD0
4E 74 73 6F 68 47 74 65 47 00 65 6D 61 4E 74 75 -- 051AE0
65 47 00 65 6C 61 63 53 48 74 65 47 00 65 6D 61 -- 051AF0
6B 73 61 4D 74 65 47 00 65 6C 61 63 53 57 48 74 -- 051B00
65 6D 61 4E 6B 73 61 4D 74 65 47 00 74 73 69 4C -- 051B10
74 6E 69 6F 50 65 72 75 73 61 65 4D 74 65 47 00 -- 051B20
6E 69 6F 50 65 72 75 73 61 65 4D 74 65 47 00 31 -- 051B30
50 74 65 47 00 74 6E 69 6F 50 74 65 47 00 32 74 -- 051B40
00 6B 73 61 4D 79 74 69 73 6E 65 44 74 6E 69 6F -- 051B50
74 50 74 65 47 00 74 63 65 74 6F 72 50 74 65 47 -- 051B60
43 66 65 52 74 65 47 00 73 70 6C 45 74 63 65 52 -- 051B70
65 47 00 74 6E 69 6F 50 66 65 52 74 65 47 00 54 -- 051B80
53 57 74 65 47 00 74 63 65 74 6F 72 50 6E 55 74 -- 051B90
6E 4F 6F 66 6E 49 74 73 6F 68 47 00 65 6C 61 63 -- 051BA0
43 64 61 72 47 00 31 74 6E 6F 43 64 61 72 47 00 -- 051BB0
47 00 33 74 6E 6F 43 64 61 72 47 00 32 74 6E 6F -- 051BC0
64 6E 45 64 61 72 47 00 34 74 6E 6F 43 64 61 72 -- 051BD0
45 64 61 72 47 00 32 64 6E 45 64 61 72 47 00 31 -- 051BE0
61 72 47 00 34 64 6E 45 64 61 72 47 00 33 64 6E -- 051BF0
63 74 45 64 61 72 47 00 31 68 63 74 45 64 01 FE -- 051C00
61 72 47 00 33 68 63 74 45 64 61 72 47 00 32 68 -- 051C10
68 70 61 72 47 64 61 72 47 00 34 68 63 74 45 64 -- 051C20
00 6E 4F 68 70 61 72 47 64 61 72 47 00 66 66 4F -- 051C30
69 48 64 61 72 47 00 31 68 67 69 48 64 61 72 47 -- 051C40
72 47 00 33 68 67 69 48 64 61 72 47 00 32 68 67 -- 051C50
31 41 69 4D 64 61 72 47 00 34 68 67 69 48 64 61 -- 051C60
69 4D 64 61 72 47 00 32 41 69 4D 64 61 72 47 00 -- 051C70
64 61 72 47 00 34 41 69 4D 64 61 72 47 00 33 41 -- 051C80
72 47 00 32 64 69 4D 64 61 72 47 00 31 64 69 4D -- 051C90

00 34 64 69 4D 64 61 72 47 00 33 64 69 4D 64 61 -- 051CA0
```

EP 0 533 348 A2

```
53 64 61 72 47 00 6E 65 65 72 63 53 64 61 72 47 -- 051CB0
47 00 32 64 61 68 53 64 61 72 47 00 31 64 61 68 -- 051CC0
61 68 53 64 61 72 47 00 33 64 61 68 53 64 61 72 -- 051CD0
61 72 47 00 31 65 7A 69 53 64 61 72 47 00 34 64 -- 051CE0
33 65 7A 69 53 64 61 72 47 00 32 65 7A 69 53 64 -- 051CF0
53 64 61 72 47 00 31 74 72 74 53 64 61 72 47 00 -- 051D00
47 00 33 74 72 74 53 64 61 72 47 00 32 74 72 74 -- 051D10
69 74 61 64 61 72 47 00 34 74 72 74 53 64 61 72 -- 051D20
74 61 64 61 72 47 00 66 66 4F 6F 66 6E 49 6E 6F -- 051D30
48 00 70 6C 65 48 00 6E 4F 6F 66 6E 49 6E 6F 69 -- 051D40
49 00 74 69 6C 70 53 6C 61 74 6E 6F 7A 69 72 6F -- 051D50
6E 49 00 68 73 75 72 42 72 69 41 6D 6F 6F 5A 66 -- 051D60
73 77 6F 64 6E 69 57 6F 66 6E 49 00 64 6F 6D 5F -- 051D70
4F 73 77 6F 64 6E 69 57 6F 66 6E 49 00 66 66 4F -- 051D80
49 00 79 74 69 73 6E 65 44 64 6F 6D 6E 49 00 6E -- 051D90
75 43 6D 6F 6F 5A 65 76 69 74 63 61 72 65 74 6E -- 051DA0
6F 6F 5A 65 76 69 74 63 61 72 65 74 6E 49 00 74 -- 051DB0
00 74 72 65 76 6E 49 00 65 72 75 73 61 65 4D 6D -- 051DC0
00 74 69 6D 69 4C 73 6E 65 44 74 72 65 76 6E 49 -- 051DD0
6E 49 00 79 74 69 73 6E 65 44 74 72 65 76 6E 49 -- 051DE0
76 6E 49 00 61 65 72 41 64 61 72 47 74 72 65 76 -- 051DF0
72 65 76 6E 49 00 6C 61 63 6F 4C 74 72 65 01 FE -- 051E00
74 73 69 4C 65 6C 69 46 73 49 00 77 65 69 56 74 -- 051E10
79 65 4B 00 66 65 64 62 6F 4A 00 79 74 70 6D 45 -- 051E20
79 65 4B 00 6B 63 61 6C 42 70 65 53 65 6E 69 6C -- 051E30
6C 79 65 4B 00 6E 61 79 43 70 65 53 65 6E 69 6C -- 051E40
65 4B 00 61 74 6E 65 67 61 4D 70 65 53 65 6E 69 -- 051E50
4C 00 77 6F 6C 6C 65 59 70 65 53 65 6E 69 6C 79 -- 051E60
45 74 66 65 4C 00 68 63 74 61 72 63 53 74 73 61 -- 051E70
47 74 73 69 4C 00 74 43 74 73 69 4C 00 65 67 64 -- 051E80
61 72 47 74 73 69 4C 00 6C 61 63 6F 4C 64 61 72 -- 051E90
69 6F 50 6C 61 63 6F 4C 00 63 69 6C 62 75 50 64 -- 051EA0
74 6E 69 6F 50 6C 61 63 6F 4C 00 66 66 4F 74 6E -- 051EB0
31 73 75 6E 69 4D 74 73 6F 68 47 42 4D 00 6E 4F -- 051EC0
4D 00 32 73 75 6E 69 4D 74 73 6F 68 47 42 4D 00 -- 051ED0
47 42 4D 00 33 73 75 6E 69 4D 74 73 6F 68 47 42 -- 051EE0
73 6F 68 47 42 4D 00 31 73 75 6C 50 74 73 6F 68 -- 051EF0
6C 50 74 73 6F 68 47 42 4D 00 32 73 75 6C 50 74 -- 051F00
73 75 6E 69 4D 74 73 6F 68 47 4D 4D 00 33 73 75 -- 051F10
00 32 73 75 6E 69 4D 74 73 6F 68 47 4D 4D 00 31 -- 051F20
4D 4D 00 33 73 75 6E 69 4D 74 73 6F 68 47 4D 4D -- 051F30
6F 68 47 4D 4D 00 31 73 75 6C 50 74 73 6F 68 47 -- 051F40
50 74 73 6F 68 47 4D 4D 00 32 73 75 6C 50 74 73 -- 051F50
46 53 77 42 6D 65 73 73 41 61 4D 00 33 73 75 6C -- 051F60
74 61 72 61 70 65 53 61 74 6E 65 67 61 4D 00 42 -- 051F70
00 66 66 4F 6F 66 6E 49 6B 73 61 4D 00 6E 6F 69 -- 051F80
4E 6B 73 61 4D 00 6E 4F 6F 66 6E 49 6B 73 61 4D -- 051F90
66 4F 6E 4F 6B 73 61 4D 00 74 73 69 78 45 74 6F -- 051FA0
61 65 4D 00 66 66 4F 65 72 75 73 61 65 4D 00 66 -- 051FB0
00 73 65 67 61 73 73 65 4D 00 6E 4F 65 72 75 73 -- 051FC0
4D 00 61 65 72 41 64 61 72 47 79 66 69 64 6F 4D -- 051FD0
74 75 43 4C 42 65 76 6F 4D 00 65 7A 69 53 76 6F -- 051FE0
43 65 76 6F 4D 00 74 75 43 52 42 65 76 6F 4D 00 -- 051FF0
66 6E 49 65 76 6F 4D 00 74 73 65 44 74 75 01 FE -- 052000
65 76 6F 4D 00 66 66 4F 65 76 6F 4D 00 6E 4F 6F -- 052010
75 43 4C 54 65 76 6F 4D 00 74 75 43 6B 63 69 50 -- 052020
63 6C 63 4E 00 74 75 43 52 54 65 76 6F 4D 00 74 -- 052030

5F 77 65 4E 00 72 65 6B 72 61 4D 6B 63 69 50 72 -- 052040
49 72 6F 43 6C 6F 43 74 78 65 4E 00 61 65 72 41 -- 052050
```

366

```
00 4C 6E 65 65 72 63 53 74 78 65 4E 00 6F 66 6E -- 052060
67 64 45 6C 61 6D 72 6F 4E 00 6B 73 61 4D 6F 4E -- 052070
73 61 4D 6D 75 4E 00 65 67 64 45 6D 75 4E 00 65 -- 052080
73 65 52 6B 73 61 4D 6D 75 4E 00 73 65 52 48 6B -- 052090
6D 75 4E 00 73 65 52 57 6B 73 61 4D 6D 75 4E 00 -- 0520A0
53 77 42 62 6D 65 73 73 41 66 66 4F 00 73 65 52 -- 0520B0
74 65 6D 6F 74 69 73 6E 65 44 66 66 4F 00 42 46 -- 0520C0
66 66 4F 54 59 4C 46 74 65 73 66 66 4F 00 72 65 -- 0520D0
66 4F 00 6E 4F 54 59 4C 46 74 65 73 66 66 4F 00 -- 0520E0
73 66 66 4F 00 48 65 73 61 42 6F 54 74 65 73 66 -- 0520F0
6F 6D 5F 74 75 4F 00 57 65 73 61 42 6F 54 74 65 -- 052100
00 79 74 69 73 6E 65 44 64 6F 6D 74 75 4F 00 64 -- 052110
75 4F 00 65 6D 61 4E 73 73 41 74 75 70 74 75 4F -- 052120
6D 61 72 61 50 00 6E 4F 6F 66 6E 49 74 75 70 74 -- 052130
65 73 61 42 73 6D 61 72 61 50 00 73 72 65 74 65 -- 052140
6B 63 69 50 00 65 76 6F 4D 73 6D 61 72 61 50 00 -- 052150
69 50 00 72 6F 6C 6F 43 68 73 75 72 62 72 69 41 -- 052160
65 73 66 66 4F 6B 63 69 50 00 70 73 69 44 6B 63 -- 052170
50 00 72 6F 43 6C 6F 43 70 75 6B 63 69 50 00 74 -- 052180
75 50 00 6F 66 6E 49 72 6F 43 6C 6F 43 76 65 72 -- 052190
72 65 62 6D 75 4E 65 67 6E 61 52 00 52 43 68 73 -- 0521A0
63 6F 4C 65 52 00 79 61 6C 70 73 69 44 65 52 00 -- 0521B0
6F 50 63 65 52 00 68 63 74 61 72 63 53 65 74 61 -- 0521C0
72 62 72 69 41 6C 6C 61 63 65 52 00 31 74 6E 69 -- 0521D0
75 73 61 65 4D 72 65 76 6F 63 65 52 00 68 73 75 -- 0521E0
75 73 61 65 4D 72 65 76 6F 63 65 52 00 31 65 72 -- 0521F0
44 65 6C 67 6E 61 74 63 65 52 00 32 65 72 01 FE -- 052200
6E 49 66 65 52 00 65 73 61 42 66 65 52 00 6D 69 -- 052210
66 65 52 00 6E 65 65 72 63 53 6E 65 64 64 69 48 -- 052220
4F 6F 66 6E 49 66 65 52 00 66 66 4F 6F 66 6E 49 -- 052230
52 00 74 6E 69 6F 50 6F 66 6E 49 66 65 52 00 6E -- 052240
74 65 6D 61 72 61 50 66 65 52 00 76 6F 4D 66 65 -- 052250
66 65 52 00 74 6E 69 6F 50 66 65 52 00 73 72 65 -- 052260
72 66 65 52 00 74 6E 69 6F 50 65 63 6E 65 72 65 -- 052270
65 76 69 74 61 6C 65 52 00 6B 73 61 4D 68 73 65 -- 052280
73 65 52 00 65 73 61 42 73 65 52 00 79 70 6F 43 -- 052290
65 53 42 74 65 73 65 52 00 65 6C 62 61 76 6F 4D -- 0522A0
65 73 65 52 00 70 65 53 43 74 65 73 65 52 00 70 -- 0522B0
76 69 74 63 61 65 44 74 65 73 65 52 00 74 43 74 -- 0522C0
41 64 61 72 47 74 65 73 65 52 00 74 43 65 74 61 -- 0522D0
65 52 00 42 64 61 72 47 74 65 73 65 52 00 6C 6C -- 0522E0
72 47 74 65 73 65 52 00 43 64 61 72 47 74 65 73 -- 0522F0
52 00 59 64 61 72 47 74 65 73 65 52 00 4D 64 61 -- 052300
61 4D 74 65 73 65 52 00 70 65 53 4D 74 65 73 65 -- 052310
61 42 66 65 52 74 65 73 65 52 00 73 65 52 6B 73 -- 052320
52 00 76 6F 4D 66 65 52 74 65 73 65 52 00 65 73 -- 052330
65 73 65 52 00 68 63 74 65 72 74 53 74 65 73 65 -- 052340
75 43 42 41 65 6D 75 73 65 52 00 70 65 53 59 74 -- 052350
53 00 65 67 64 45 74 68 67 69 52 00 72 6F 73 72 -- 052360
4C 74 72 6F 62 41 53 00 6C 6C 41 74 72 6F 62 41 -- 052370
79 6C 6F 50 74 72 6F 62 41 53 00 79 6C 6F 50 57 -- 052380
63 6E 61 43 53 00 63 65 52 74 72 6F 62 41 53 00 -- 052390
00 74 6E 50 6C 63 6E 43 53 00 6B 73 61 4D 6C 65 -- 0523A0
6F 6D 5F 6E 49 53 00 63 65 72 5F 77 61 72 44 53 -- 0523B0
50 63 65 52 53 00 64 6F 6D 5F 74 75 4F 53 00 64 -- 0523C0
6F 50 57 4C 74 72 61 74 53 53 00 31 74 6E 69 6F -- 0523D0

54 53 00 6B 73 61 4D 74 72 61 74 53 53 00 79 6C -- 0523E0
73 61 4D 72 65 54 53 00 79 6C 6F 50 57 4C 72 65 -- 0523F0
61 53 00 74 69 6C 70 53 65 6D 61 53 00 6B 01 FE -- 052400
```

367

```
72 47 65 76 61 53 00 74 6E 69 6F 50 65 6C 70 6D -- 052410
65 54 6E 65 65 72 63 53 00 65 6C 62 61 54 64 61 -- 052420
63 65 53 00 6B 73 61 4D 79 74 69 73 6E 65 44 72 -- 052430
65 53 00 74 6E 69 6F 50 74 69 6D 69 4C 64 6E 6F -- 052440
6C 41 74 65 53 00 64 61 72 47 72 65 74 66 41 74 -- 052450
6C 41 74 65 53 00 68 63 74 45 72 6F 6C 6F 43 6C -- 052460
65 53 00 66 66 4F 42 74 65 53 00 73 70 65 53 6C -- 052470
74 65 53 00 70 65 53 42 74 65 53 00 6E 4F 42 74 -- 052480
00 6E 6F 69 74 61 64 61 72 47 65 72 6F 66 65 42 -- 052490
74 65 53 00 68 63 74 45 6B 63 61 6C 42 74 65 53 -- 0524A0
42 74 65 53 00 30 65 70 61 68 53 68 73 75 72 42 -- 0524B0
72 42 74 65 53 00 31 65 70 61 68 53 68 73 75 72 -- 0524C0
75 72 42 74 65 53 00 32 65 70 61 68 53 68 73 75 -- 0524D0
73 75 72 42 74 65 53 00 33 65 70 61 68 53 68 73 -- 0524E0
68 73 75 72 42 74 65 53 00 34 65 70 61 68 53 68 -- 0524F0
53 68 73 75 72 42 74 65 53 00 35 65 70 61 68 53 -- 052500
74 53 68 73 75 72 42 74 65 53 00 78 65 70 61 68 -- 052510
54 68 73 75 72 42 74 65 53 00 68 74 67 6E 65 72 -- 052520
66 66 4F 43 74 65 53 00 73 73 65 6E 6B 63 69 68 -- 052530
00 70 65 53 43 74 65 53 00 6E 4F 43 74 65 53 00 -- 052540
53 00 6E 6F 69 74 61 72 62 69 6C 61 43 74 65 53 -- 052550
72 6F 43 74 65 53 00 52 72 65 74 6E 65 43 74 65 -- 052560
72 65 6E 72 6F 43 74 65 53 00 52 4C 42 72 65 6E -- 052570
52 4C 54 72 65 6E 72 6F 43 74 65 53 00 52 52 42 -- 052580
65 53 00 52 52 54 72 65 6E 72 6F 43 74 65 53 00 -- 052590
67 64 45 74 65 53 00 68 63 74 45 6E 61 79 43 74 -- 0525A0
57 65 67 64 45 74 65 53 00 74 65 73 66 66 4F 65 -- 0525B0
53 00 72 65 6C 6C 69 46 74 65 53 00 68 74 64 69 -- 0525C0
70 61 72 47 74 65 53 00 6C 61 62 6F 6C 47 74 65 -- 0525D0
67 61 6C 46 48 74 65 53 00 73 65 6C 62 61 54 68 -- 0525E0
6F 4C 74 65 53 00 67 61 6C 46 56 48 74 65 53 00 -- 0525F0
65 53 00 66 66 4F 4D 74 65 53 00 6C 61 63 01 FE -- 052600
74 65 53 00 70 65 53 4D 74 65 53 00 6E 4F 4D 74 -- 052610
54 74 65 53 00 68 63 74 45 61 74 6E 65 67 61 4D -- 052620
53 00 67 61 6C 46 56 74 65 53 00 65 6C 67 67 6F -- 052630
65 53 00 6E 4F 59 74 65 53 00 66 66 4F 59 74 65 -- 052640
45 77 6F 6C 6C 65 59 74 65 53 00 70 65 53 59 74 -- 052650
53 00 65 7A 69 53 64 65 72 61 68 53 00 68 63 74 -- 052660
65 52 77 6F 68 53 00 66 66 4F 66 65 52 77 6F 68 -- 052670
74 6E 69 6F 50 66 65 52 77 6F 68 53 00 6E 4F 66 -- 052680
6F 6D 53 00 74 72 6F 62 41 68 74 6F 6F 6D 53 00 -- 052690
00 6E 4F 68 74 6F 6F 6D 53 00 66 66 4F 68 74 6F -- 0526A0
53 00 68 63 74 61 72 63 53 42 41 74 72 61 74 53 -- 0526B0
74 72 61 74 53 00 64 61 72 47 62 41 74 72 61 74 -- 0526C0
6F 41 74 72 61 74 53 00 68 73 75 72 42 72 69 41 -- 0526D0
72 61 74 53 00 72 75 6C 42 74 72 61 74 53 00 69 -- 0526E0
53 00 68 63 74 65 43 74 72 61 74 53 00 54 43 74 -- 0526F0
6F 54 79 70 6F 43 65 67 6E 61 68 43 74 72 61 74 -- 052700
65 72 72 6F 43 72 6F 6C 6F 43 74 72 61 74 53 00 -- 052710
00 79 70 6F 43 74 72 61 74 53 00 6E 6F 69 74 63 -- 052720
00 74 6E 6F 43 6F 4E 79 70 6F 43 74 72 61 74 53 -- 052730
65 44 74 72 61 74 53 00 74 75 43 74 72 61 74 53 -- 052740
74 72 61 74 53 00 72 65 74 65 6D 6F 74 69 73 6E -- 052750
72 61 74 53 00 6B 73 61 4D 79 74 69 73 6E 65 44 -- 052760
68 63 74 45 74 72 61 74 53 00 65 73 61 72 45 74 -- 052770

74 53 00 72 61 42 68 63 74 45 74 72 61 74 53 00 -- 052780
68 47 74 72 61 74 53 00 68 63 74 65 46 74 72 61 -- 052790
69 74 61 64 61 72 47 74 72 61 74 53 00 74 73 6F -- 0527A0
6F 69 74 61 64 61 72 47 74 72 61 74 53 00 6E 6F -- 0527B0
```

368

```
57 4C 74 72 61 74 53 00 6B 73 61 4D 61 69 56 6E -- 0527C0
47 6C 61 63 6F 4C 74 72 61 74 53 00 79 6C 6F 50 -- 0527D0
74 53 00 6B 73 61 4D 74 72 61 74 53 00 64 61 72 -- 0527E0
74 72 61 74 53 00 74 63 65 74 6F 72 50 74 72 61 -- 0527F0
53 74 72 61 74 53 00 68 63 74 61 72 63 53 01 FE -- 052800
61 74 53 00 74 6E 6F 43 6F 4E 68 63 74 61 72 63 -- 052810
74 53 00 73 6E 6F 69 74 61 72 61 70 65 53 74 72 -- 052820
69 53 74 72 61 74 53 00 70 72 61 68 53 74 72 61 -- 052830
53 00 6E 6F 69 74 61 72 61 70 65 53 65 6C 67 6E -- 052840
53 00 72 61 42 6C 61 69 63 65 70 53 74 72 61 74 -- 052850
00 6E 65 65 72 63 53 74 69 6C 70 53 74 72 61 74 -- 052860
74 72 61 74 53 00 79 61 72 70 53 74 72 61 74 53 -- 052870
72 68 54 74 72 61 74 53 00 68 63 74 65 72 74 53 -- 052880
72 50 6E 55 74 72 61 74 53 00 68 73 75 72 42 75 -- 052890
53 00 70 6D 6F 43 70 6F 74 53 00 74 63 65 74 6F -- 0528A0
41 64 6E 65 70 73 75 53 00 66 65 64 65 6C 79 74 -- 0528B0
73 65 44 74 75 43 4C 54 00 72 6F 73 72 75 43 42 -- 0528C0
67 67 61 54 00 74 73 65 44 74 75 43 52 54 00 74 -- 0528D0
00 74 75 43 72 65 54 00 72 6F 6C 6F 43 5F 65 6C -- 0528E0
54 00 6B 73 61 4D 79 74 69 73 6E 65 44 72 65 54 -- 0528F0
6B 73 61 4D 72 65 54 00 79 6C 6F 50 57 4C 72 65 -- 052900
52 72 65 54 00 74 63 65 74 6F 72 50 72 65 54 00 -- 052910
54 00 74 6E 69 6F 50 66 65 52 72 65 54 00 66 65 -- 052920
42 68 63 74 45 6D 72 65 54 00 69 6F 41 6D 72 65 -- 052930
73 61 72 45 65 74 61 6E 69 6D 72 65 54 00 72 61 -- 052940
74 65 72 74 53 65 74 61 6E 69 6D 72 65 54 00 65 -- 052950
54 00 6C 61 63 6F 4C 65 6C 67 67 6F 54 00 68 63 -- 052960
74 65 47 6E 55 00 74 65 73 65 52 65 6C 67 67 6F -- 052970
6B 73 61 4D 77 65 69 56 6E 55 00 74 6E 69 6F 50 -- 052980
74 6E 69 6F 50 74 75 43 74 73 31 6F 64 6E 55 00 -- 052990
73 72 65 6B 72 61 4D 72 63 6C 43 6F 64 6E 55 00 -- 0529A0
64 6E 55 00 70 6D 75 4A 74 75 43 6F 64 6E 55 00 -- 0529B0
6E 65 44 6F 64 6E 55 00 74 63 65 52 74 75 43 6F -- 0529C0
72 47 6F 64 6E 55 00 74 6E 69 6F 50 79 74 69 73 -- 0529D0
65 72 63 53 6F 64 6E 55 00 6E 6F 69 74 61 64 61 -- 0529E0
55 00 66 65 64 73 74 69 6E 55 00 72 65 54 6E 65 -- 0529F0
61 64 70 55 00 6B 73 61 4D 73 73 41 64 70 01 FE -- 052A00
74 61 64 70 55 00 68 73 75 72 62 72 69 41 65 74 -- 052A10
70 55 00 54 43 65 63 61 6C 70 65 52 64 6E 41 65 -- 052A20
54 43 65 74 61 64 70 55 00 69 6F 41 65 74 61 64 -- 052A30
74 61 64 70 55 00 64 6E 75 6F 72 67 6B 63 61 42 -- 052A40
6E 45 65 74 61 64 70 55 00 72 6F 43 6C 6F 43 65 -- 052A50
65 74 61 64 70 55 00 68 73 75 72 42 72 69 41 64 -- 052A60
64 61 72 47 65 74 61 64 70 55 00 74 73 6F 68 47 -- 052A70
65 72 63 53 65 74 61 64 70 55 00 6E 6F 69 74 61 -- 052A80
74 69 6C 70 53 6C 61 63 69 74 72 65 56 00 6E 65 -- 052A90
56 00 6E 49 79 74 69 73 6E 65 44 77 65 69 56 00 -- 052AA0
56 00 6B 73 61 4D 79 74 69 73 6E 65 44 77 65 69 -- 052AB0
61 57 00 74 75 4F 79 74 69 73 6E 65 44 77 65 69 -- 052AC0
69 68 57 00 62 6F 4A 79 61 6C 70 73 69 44 74 69 -- 052AD0
69 68 57 00 65 70 61 68 53 68 73 75 72 42 68 63 -- 052AE0
6D 44 68 63 69 68 57 00 73 70 65 53 54 43 68 63 -- 052AF0
47 68 63 69 68 57 00 65 7A 69 53 74 61 4D 6B 73 -- 052B00
70 65 53 68 63 69 68 57 00 73 70 65 53 64 61 72 -- 052B10

63 6C 43 77 6F 64 6E 69 57 00 73 75 74 61 74 53 -- 052B20
69 53 77 6F 64 6E 69 57 00 65 72 6F 66 65 42 72 -- 052B30
00 32 65 7A 69 53 77 6F 64 6E 69 57 00 31 65 7A -- 052B40
65 52 59 58 00 33 65 7A 69 53 77 6F 64 6E 69 57 -- 052B50
4D 74 73 6F 68 47 42 59 00 65 63 6E 65 72 65 66 -- 052B60
```

```
6E  69  4D  74  73  6F  68  47  42  59  00  31  73  75  6E  69  --  052B70
73  75  6E  69  4D  74  73  6F  68  47  42  59  00  32  73  75  --  052B80
59  00  31  73  75  6C  50  74  73  6F  68  47  42  59  00  33  --  052B90
68  47  42  59  00  32  73  75  6C  50  74  73  6F  68  47  42  --  052BA0
74  73  6F  68  47  4D  59  00  33  73  75  6C  50  74  73  6F  --  052BB0
69  4D  74  73  6F  68  47  4D  59  00  31  73  75  6E  69  4D  --  052BC0
75  6E  69  4D  74  73  6F  68  47  4D  59  00  32  73  75  6E  --  052BD0
00  31  73  75  6C  50  74  73  6F  68  47  4D  59  00  33  73  --  052BE0
47  4D  59  00  32  73  75  6C  50  74  73  6F  68  47  4D  59  --  052BF0
73  41  65  59  00  33  73  75  6C  50  74  73  6F  68  01  FE  --  052C00
53  77  6F  6C  6C  65  59  00  42  46  53  77  42  6D  65  73  --  052C10
5A  00  4D  4F  4F  5A  00  6E  6F  69  74  61  72  61  70  65  --  052C20
6E  69  6F  50  6D  6F  6F  5A  00  6B  63  61  42  6D  6F  6F  --  052C30
00  0F  00  64  19  EA  00  3C  00  00  00  00  64  00  31  74  --  052C40
00  2B  00  44  EE  07  00  3C  00  1D  00  44  EE  34  00  3C  --  052C50
00  46  00  44  ED  26  00  3C  00  39  00  44  ED  DA  00  3C  --  052C60
00  60  00  44  EC  CC  00  3C  00  53  00  44  EC  F9  00  3C  --  052C70
00  78  00  44  EE  BB  00  3C  00  6A  00  1C  E4  83  00  3C  --  052C80
00  94  00  44  EE  61  00  3C  00  86  00  44  EE  8E  00  3C  --  052C90
00  AE  00  44  ED  80  00  3C  00  A1  00  44  ED  AD  00  3C  --  052CA0
00  CC  00  14  37  A2  00  3C  00  BB  00  44  ED  53  00  3C  --  052CB0
00  E2  00  2C  69  AB  00  3C  00  D8  00  2C  60  F3  00  3C  --  052CC0
00  F8  00  44  98  BF  00  3C  00  EB  00  2C  69  F5  00  3C  --  052CD0
01  10  00  54  46  BD  00  3C  01  05  00  44  99  4A  00  3C  --  052CE0
01  28  00  4C  23  01  00  3C  01  1A  00  4C  9C  58  00  3C  --  052CF0
01  47  00  54  36  78  00  3C  01  37  00  4C  21  07  00  3C  --  052D00
01  66  00  4C  C2  49  00  3C  01  56  00  54  33  E2  00  3C  --  052D10
01  82  00  5C  24  D0  00  3C  01  75  00  5C  68  33  00  3C  --  052D20
01  98  00  34  99  52  00  3C  01  8E  00  34  99  10  00  3C  --  052D30
01  B0  00  34  96  41  00  3C  01  A4  00  34  99  31  00  3C  --  052D40
01  D5  00  5C  02  40  00  3C  01  C0  00  5C  00  00  00  3C  --  052D50
01  FA  00  5C  06  01  00  3C  01  E8  00  5C  07  24  00  3C  --  052D60
02  23  00  5C  06  C3  00  3C  02  0F  00  5C  06  62  00  3C  --  052D70
02  37  00  34  A0  7D  00  3C  02  2E  00  34  9C  8A  00  3C  --  052D80
02  50  00  44  EA  01  00  3C  02  42  00  64  4A  81  00  3C  --  052D90
02  6C  00  44  E9  93  00  3C  02  5E  00  44  E9  CA  00  3C  --  052DA0
02  86  00  44  E4  A2  00  3C  02  79  00  44  E4  D9  00  3C  --  052DB0
02  9D  00  34  74  6D  00  3C  02  93  00  44  E4  6B  00  3C  --  052DC0
02  B9  00  44  EC  5E  00  3C  02  AB  00  44  EC  95  00  3C  --  052DD0
02  D4  00  44  E7  6D  00  3C  02  C7  00  44  EC  27  00  3C  --  052DE0
02  EE  00  44  E6  FF  00  3C  02  E1  00  44  E7  36  00  3C  --  052DF0
00  44  5F  BC  00  3C  02  F8  00  34  71  21  00  3C  01  FE  --  052E00
00  1C  66  F9  00  3C  03  13  00  54  2D  E7  00  3C  03  08  --  052E10
00  4C  9B  A8  00  3C  03  28  00  1C  66  79  00  3C  03  1F  --  052E20
00  64  44  42  00  3C  03  40  00  5C  09  8F  00  3C  03  33  --  052E30
00  5C  7C  1B  00  3C  03  5F  00  5C  63  D8  00  3C  03  4F  --  052E40
00  44  E8  12  00  3C  03  76  00  5C  79  FE  00  3C  03  6B  --  052E50
00  44  E7  A4  00  3C  03  92  00  44  E7  DB  00  3C  03  84  --  052E60
00  44  E2  B3  00  3C  03  AD  00  44  E2  EA  00  3C  03  A0  --  052E70
00  44  EA  A6  00  3C  03  C7  00  44  E2  7C  00  3C  03  BA  --  052E80
00  44  EA  38  00  3C  03  E3  00  44  EA  6F  00  3C  03  D5  --  052E90
00  44  E5  47  00  3C  03  FE  00  44  E5  7E  00  3C  03  F1  --  052EA0
00  54  A5  FF  00  3C  04  18  00  44  E5  10  00  3C  04  0B  --  052EB0

00  54  A2  55  00  3C  04  2B  00  54  A0  E0  00  3C  04  22  --  052EC0
00  54  3F  06  00  3C  04  43  00  54  A6  77  00  3C  04  38  --  052ED0
00  54  47  FB  00  3C  04  55  00  54  49  56  00  3C  04  4A  --  052EE0
00  4C  F0  04  00  3C  04  6F  00  5C  52  9A  00  3C  04  62  --  052EF0
00  14  7F  B8  00  3C  04  8B  00  34  A8  12  00  3C  04  7E  --  052F00
00  34  6A  53  00  3C  04  A2  00  14  80  26  00  3C  04  98  --  052F10
```

370

```
00  2C  AE  9D  00  3C  04  B8  00  1C  89  B2  00  3C  04  AC  --  052F20
00  54  F0  D9  00  3C  04  D1  00  2C  4B  4C  00  3C  04  C6  --  052F30
00  1C  69  49  00  3C  04  EB  00  1C  69  F6  00  3C  04  DB  --  052F40
00  1C  5F  C1  00  3C  05  04  00  1C  AD  77  00  3C  04  F8  --  052F50
00  64  19  EA  00  3C  05  23  00  14  F1  29  00  3C  05  10  --  052F60
00  5C  7D  27  00  3C  05  48  00  5C  7E  5C  00  3C  05  36  --  052F70
00  64  19  EA  00  3C  05  6C  00  14  59  79  00  3C  05  5A  --  052F80
00  5C  55  DC  00  3C  05  8C  00  5C  14  E4  00  3C  05  7C  --  052F90
00  5C  54  E9  00  3C  05  AE  00  44  C2  5B  00  3C  05  9D  --  052FA0
00  14  A0  B1  00  3C  05  C2  00  14  78  65  00  3C  05  BA  --  052FB0
00  14  A1  2D  00  3C  05  DA  00  14  A0  EF  00  3C  05  CE  --  052FC0
00  14  A1  A9  00  3C  05  F2  00  14  A1  6B  00  3C  05  E6  --  052FD0
00  54  E5  EA  00  3C  06  06  00  2C  68  ED  00  3C  05  FE  --  052FE0
00  14  69  57  00  3C  06  21  00  54  DE  6C  00  3C  06  14  --  052FF0
E7  1A  00  3C  06  3E  00  64  41  FE  00  3C  06  2F  01  FE  --  053000
E1  85  00  3C  06  55  00  14  DA  A9  00  3C  06  4A  00  14  --  053010
47  17  00  3C  06  6A  00  4C  C8  1F  00  3C  06  61  00  44  --  053020
9D  56  00  3C  06  80  00  44  9A  86  00  3C  06  77  00  54  --  053030
A1  E7  00  3C  06  94  00  1C  C0  F0  00  3C  06  87  00  44  --  053040
09  CF  00  3C  06  BA  00  14  A2  89  00  3C  06  A8  00  14  --  053050
63  F6  00  3C  06  D8  00  14  A4  BD  00  3C  06  C6  00  54  --  053060
64  64  00  3C  06  E6  00  1C  64  2D  00  3C  06  DF  00  1C  --  053070
7C  4A  00  3C  06  F8  00  34  7D  00  00  3C  06  ED  00  1C  --  053080
07  85  00  3C  07  10  00  34  7C  7D  00  3C  07  02  00  34  --  053090
60  46  00  3C  07  2C  00  5C  63  9F  00  3C  07  1D  00  5C  --  0530A0
54  77  00  3C  07  4A  00  44  98  EF  00  3C  07  3B  00  14  --  0530B0
10  99  00  3C  07  6A  00  14  54  77  00  3C  07  5C  00  14  --  0530C0
2A  25  00  3C  07  86  00  14  23  88  00  3C  07  77  00  54  --  0530D0
1F  86  00  3C  07  A5  00  54  1F  62  00  3C  07  96  00  14  --  0530E0
1F  CE  00  3C  07  C3  00  54  1F  AA  00  3C  07  B4  00  54  --  0530F0
72  A1  00  3C  07  E1  00  14  04  A8  00  3C  07  D2  00  54  --  053100
65  22  00  3C  07  F9  00  54  72  7B  00  3C  07  EC  00  54  --  053110
A8  50  00  3C  08  0F  00  54  72  8E  00  3C  08  04  00  1C  --  053120
3F  97  00  3C  08  2C  00  5C  76  66  00  3C  08  21  00  14  --  053130
64  9B  00  3C  08  40  00  64  4A  0E  00  3C  08  35  00  2C  --  053140
64  DF  00  3C  08  4C  00  1C  64  BD  00  3C  08  46  00  1C  --  053150
2E  C9  00  3C  08  60  00  34  2F  B0  00  3C  08  52  00  1C  --  053160
57  0B  00  3C  08  7E  00  4C  F5  7A  00  3C  08  6D  00  34  --  053170
55  5A  00  3C  08  94  00  4C  25  81  00  3C  08  8B  00  5C  --  053180
53  B5  00  3C  08  B2  00  54  41  1A  00  3C  08  A7  00  5C  --  053190
D7  DF  00  3C  08  C5  00  34  CA  F3  00  3C  08  B7  00  44  --  0531A0
84  A1  00  3C  08  E4  00  14  EE  A2  00  3C  08  D5  00  34  --  0531B0
7A  B6  00  3C  08  FD  00  54  49  B2  00  3C  08  F4  00  44  --  0531C0
C2  5A  00  3C  09  18  00  44  B0  39  00  3C  09  0B  00  34  --  0531D0
54  84  00  3C  09  35  00  54  6E  28  00  3C  09  28  00  5C  --  0531E0
6F  0A  00  3C  09  48  00  54  6F  32  00  3C  09  3E  00  1C  --  0531F0
00  3C  09  5D  00  54  6E  E2  00  3C  09  52  00  54  01  FE  --  053200
00  3C  09  6D  00  44  E1  6E  00  3C  09  65  00  54  6F  5A  --  053210
00  3C  09  7F  00  54  6A  8E  00  3C  09  74  00  1C  61  15  --  053220
00  3C  09  8F  00  54  6A  D0  00  3C  09  89  00  44  E0  FA  --  053230
00  3C  09  A8  00  34  5D  B6  00  3C  09  99  00  54  6C  CD  --  053240
00  3C  09  C0  00  1C  62  75  00  3C  09  B7  00  34  5E  E6  --  053250

00  3C  09  D8  00  1C  53  F9  00  3C  09  CB  00  34  61  9B  --  053260
00  3C  09  ED  00  1C  71  2E  00  3C  09  E2  00  1C  71  B1  --  053270
00  3C  0A  05  00  54  09  FC  00  3C  09  F9  00  54  0C  F4  --  053280
00  3C  0A  27  00  54  7B  D7  00  3C  0A  16  00  54  7B  A1  --  053290
00  3C  0A  44  00  14  09  E7  00  3C  0A  30  00  2C  B2  23  --  0532A0
00  3C  0A  5D  00  1C  6C  53  00  3C  0A  4F  00  1C  E3  72  --  0532B0
00  3C  0A  72  00  1C  6B  CE  00  3C  0A  66  00  54  41  8D  --  0532C0
```

```
00 3C 0A 89 00 1C 71 B1 00 3C 0A 7F 00 00 00 00 -- 0532D0
00 3C 0A 9F 00 2C C1 BE 00 3C 0A 95 00 54 20 F1 -- 0532E0
00 3C 0A B3 00 2C C1 E4 00 3C 0A A9 00 2C C1 D1 -- 0532F0
00 3C 0A C6 00 2C C3 3A 00 3C 0A BD 00 2C C1 F7 -- 053300
00 3C 0A D8 00 2C C3 60 00 3C 0A CF 00 2C C3 4D -- 053310
00 3C 0A EB 00 2C C1 72 00 3C 0A E1 00 2C C3 73 -- 053320
00 3C 0A FF 00 2C C1 98 00 3C 0A F5 00 2C C1 85 -- 053330
00 3C 0B 16 00 2C CC 24 00 3C 0B 09 00 2C C1 AB -- 053340
00 3C 0B 2C 00 2C C2 0A 00 3C 0B 22 00 2C CC 11 -- 053350
00 3C 0B 40 00 2C C2 30 00 3C 0B 36 00 2C C2 1D -- 053360
00 3C 0B 53 00 2C C3 86 00 3C 0B 4A 00 2C C2 43 -- 053370
00 3C 0B 65 00 2C C3 AC 00 3C 0B 5C 00 2C C3 99 -- 053380
00 3C 0B 77 00 2C C2 56 00 3C 0B 6E 00 2C C3 BF -- 053390
00 3C 0B 89 00 2C C2 7C 00 3C 0B 80 00 2C C2 69 -- 0533A0
00 3C 0B 9D 00 4C 98 FB 00 3C 0B 92 00 2C C2 8F -- 0533B0
00 3C 0B B1 00 2C C2 B5 00 3C 0B A7 00 2C C2 A2 -- 0533C0
00 3C 0B C5 00 2C C2 DB 00 3C 0B BB 00 2C C2 C8 -- 0533D0
00 3C 0B D9 00 4C A0 8F 00 3C 0B CF 00 4C A0 7B -- 0533E0
00 3C 0B ED 00 2C C2 EE 00 3C 0B E3 00 4C A0 A3 -- 0533F0
0C 01 00 2C C3 14 00 3C 0B F7 00 2C C3 01 01 FE -- 053400
0C 1C 00 2C D0 CB 00 3C 0C 0B 00 2C C3 27 00 3C -- 053410
0C 31 00 54 47 86 00 3C 0C 2C 00 2C CC 93 00 3C -- 053420
0C 50 00 4C 67 2C 00 3C 0C 41 00 54 4B 16 00 3C -- 053430
0C 66 00 14 F9 B0 00 3C 0C 57 00 2C 44 6E 00 3C -- 053440
0C 81 00 14 1D 33 00 3C 0C 74 00 14 FA 6E 00 3C -- 053450
0C AB 00 54 7B 39 00 3C 0C 94 00 34 81 DB 00 3C -- 053460
0C C2 00 14 57 F8 00 3C 0C B2 00 1C B5 C0 00 3C -- 053470
0C DF 00 44 B2 0E 00 3C 0C D0 00 14 57 D9 00 3C -- 053480
0C F6 00 14 58 17 00 3C 0C EB 00 5C E8 5C 00 3C -- 053490
0D 0D 00 54 48 45 00 3C 0D 06 00 54 40 A4 00 3C -- 0534A0
0D 2C 00 4C 18 40 00 3C 0D 1D 00 4C 18 B5 00 3C -- 0534B0
0D 4F 00 4C 18 8E 00 3C 0D 3E 00 4C 18 67 00 3C -- 0534C0
0D 64 00 5C 18 D8 00 3C 0D 5B 00 34 D1 58 00 3C -- 0534D0
0D 79 00 44 33 07 00 3C 0D 6B 00 1C 53 4C 00 3C -- 0534E0
0D 96 00 54 99 9D 00 3C 0D 88 00 44 34 84 00 3C -- 0534F0
0D B1 00 44 E8 B7 00 3C 0D A3 00 54 93 A2 00 3C -- 053500
0D CD 00 44 E8 49 00 3C 0D BF 00 44 E8 80 00 3C -- 053510
0D E7 00 44 E3 58 00 3C 0D DA 00 44 E3 8F 00 3C -- 053520
0E 02 00 44 EB 4B 00 3C 0D F4 00 44 E3 21 00 3C -- 053530
0E 1E 00 44 EA DD 00 3C 0E 10 00 44 EB 14 00 3C -- 053540
0E 38 00 44 E5 EC 00 3C 0E 2B 00 44 E6 23 00 3C -- 053550
0E 52 00 5C 08 33 00 3C 0E 45 00 44 E5 B5 00 3C -- 053560
0E 70 00 64 07 03 00 3C 0E 64 00 5C 63 B2 00 3C -- 053570
0E 88 00 54 0F 6F 00 3C 0E 7B 00 64 03 DA 00 3C -- 053580
0E 9D 00 54 7A F9 00 3C 0E 92 00 54 46 D4 00 3C -- 053590
0E B0 00 54 48 29 00 3C 0E A7 00 54 78 9E 00 3C -- 0535A0
0E C7 00 1C 65 F9 00 3C 0E BF 00 44 A6 5E 00 3C -- 0535B0
0E DB 00 34 76 61 00 3C 0E D1 00 34 76 FD 00 3C -- 0535C0
0E F2 00 54 2E 3B 00 3C 0E E7 00 34 78 75 00 3C -- 0535D0
0F 06 00 34 77 4B 00 3C 0E FA 00 1C 5F 64 00 3C -- 0535E0
0F 1A 00 34 76 AF 00 3C 0F 10 00 34 76 13 00 3C -- 0535F0

00 1C BC 1E 00 3C 0F 2A 00 14 A3 2B 00 3C 01 FE -- 053600
00 5C 21 38 00 3C 0F 42 00 54 E8 7C 00 3C 0F 33 -- 053610
00 5C 19 01 00 3C 0F 55 00 54 08 FD 00 3C 0F 4E -- 053620
00 1C AD 9A 00 3C 0F 68 00 1C 65 01 00 3C 0F 60 -- 053630
00 1C AE 1A 00 3C 0F 7F 00 1C AE 8A 00 3C 0F 74 -- 053640
00 5C 0A 3D 00 3C 0F 92 00 1C 62 51 00 3C 0F 8B -- 053650
00 34 A5 D3 00 3C 0F B1 00 54 1F F2 00 3C 0F A1 -- 053660
00 1C 60 5C 00 3C 0F CC 00 34 A5 30 00 3C 0F BF -- 053670
```

```
00 2C 47 8A 00 3C 0F E8 00 1C 60 73 00 3C 0F DA -- 053680
00 34 A5 EA 00 3C 0F FE 00 14 1E A9 00 3C 0F F0 -- 053690
00 54 47 A1 00 3C 10 19 00 54 26 5E 00 3C 10 0C -- 0536A0
00 1C 87 C3 00 3C 10 2F 00 1C 87 F0 00 3C 10 24 -- 0536B0
00 54 6C 82 00 3C 10 4C 00 4C D6 C0 00 3C 10 3A -- 0536C0
00 14 A5 31 00 3C 10 60 00 1C 60 8F 00 3C 10 55 -- 0536D0
00 54 09 E1 00 3C 10 7C 00 54 E6 7C 00 3C 10 6D -- 0536E0
00 54 43 E2 00 3C 10 8F 00 14 9F 00 00 3C 10 83 -- 0536F0
00 2C 3E C9 00 3C 10 A9 00 34 CF 59 00 3C 10 99 -- 053700
00 54 78 D1 00 3C 10 C2 00 4C F1 7E 00 3C 10 B3 -- 053710
00 34 6D 9D 00 3C 10 E2 00 54 79 AB 00 3C 10 D2 -- 053720
00 34 CD 2B 00 3C 10 F7 00 1C 60 26 00 3C 10 EF -- 053730
00 54 A1 92 00 3C 11 14 00 54 A6 33 00 3C 11 09 -- 053740
00 1C 60 4A 00 3C 11 2B 00 54 E7 71 00 3C 11 1E -- 053750
00 54 EA 36 00 3C 11 40 00 54 47 CE 00 3C 11 32 -- 053760
00 34 A4 19 00 3C 11 58 00 14 6C 21 00 3C 11 49 -- 053770
00 1C 61 CF 00 3C 11 71 00 44 98 D6 00 3C 11 64 -- 053780
00 2C C1 5B 00 3C 11 84 00 1C 62 10 00 3C 11 79 -- 053790
00 44 57 21 00 3C 11 98 00 2C C1 16 00 3C 11 8E -- 0537A0
00 5C 0F 52 00 3C 11 B2 00 54 46 A1 00 3C 11 A0 -- 0537B0
00 5C 0B C8 00 3C 11 CA 00 5C 0E 6F 00 3C 11 BF -- 0537C0
00 5C 0D 8C 00 3C 11 E0 00 5C 0C A9 00 3C 11 D5 -- 0537D0
00 54 4A 21 00 3C 11 F5 00 2C C1 2D 00 3C 11 EB -- 0537E0
00 1C 60 38 00 3C 12 0F 00 1C 60 14 00 3C 12 02 -- 0537F0
C1 44 00 3C 12 28 00 1C 71 11 00 3C 12 1B 01 FE -- 053800
18 AF 00 3C 12 41 00 44 9A 0D 00 3C 12 32 00 2C -- 053810
D8 D0 00 3C 12 55 00 1C E6 38 00 3C 12 4B 00 5C -- 053820
E1 57 00 3C 12 6D 00 1C E0 FB 00 3C 12 62 00 1C -- 053830
E0 7E 00 3C 12 83 00 1C C4 B9 00 3C 12 77 00 1C -- 053840
B5 E1 00 3C 12 96 00 1C B0 90 00 3C 12 8C 00 1C -- 053850
AF BB 00 3C 12 A7 00 1C B8 62 00 3C 12 9E 00 1C -- 053860
A0 75 00 3C 12 BF 00 1C D7 99 00 3C 12 B2 00 1C -- 053870
C5 B2 00 3C 12 D5 00 1C D9 98 00 3C 12 CA 00 1C -- 053880
93 FB 00 3C 12 E8 00 54 4C E5 00 3C 12 DE 00 1C -- 053890
3A E8 00 3C 13 02 00 44 2D 20 00 3C 12 F4 00 54 -- 0538A0
FA BB 00 3C 13 28 00 5C C2 CF 00 3C 13 17 00 14 -- 0538B0
25 16 00 3C 13 45 00 4C D5 66 00 3C 13 35 00 5C -- 0538C0
66 31 00 3C 13 58 00 5C 66 7D 00 3C 13 50 00 44 -- 0538D0
F8 BA 00 3C 13 67 00 44 24 FF 00 3C 13 5F 00 5C -- 0538E0
CB 67 00 3C 13 87 00 4C D5 4C 00 3C 13 7A 00 5C -- 0538F0
CB BB 00 3C 13 A5 00 4C CB 91 00 3C 13 96 00 4C -- 053900
CC 0F 00 3C 13 C3 00 4C CB E5 00 3C 13 B4 00 4C -- 053910
CD 9A 00 3C 13 E1 00 4C CC 39 00 3C 13 D2 00 4C -- 053920
CE E0 00 3C 14 01 00 4C D0 8F 00 3C 13 F0 00 4C -- 053930
65 F8 00 3C 14 1B 00 5C 66 44 00 3C 14 13 00 4C -- 053940
D2 4F 00 3C 14 2A 00 44 24 BA 00 3C 14 22 00 5C -- 053950
6B 2E 00 3C 14 44 00 1C 6A 49 00 3C 14 39 00 4C -- 053960
6A B7 00 3C 14 5E 00 1C 6B 74 00 3C 14 51 00 1C -- 053970
D4 FE 00 3C 14 78 00 1C 6A E8 00 3C 14 6B 00 1C -- 053980
16 9C 00 3C 14 92 00 5C 18 17 00 3C 14 84 00 4C -- 053990

47 78 00 3C 14 A9 00 1C 5F 50 00 3C 14 9F 00 5C -- 0539A0
6A 13 00 3C 14 C2 00 5C 50 64 00 3C 14 B3 00 54 -- 0539B0
47 66 00 3C 14 D5 00 1C 6A 37 00 3C 14 CB 00 1C -- 0539C0
66 0B 00 3C 14 E6 00 5C 66 57 00 3C 14 DE 00 54 -- 0539D0
D5 18 00 3C 14 F5 00 44 24 D1 00 3C 14 ED 00 5C -- 0539E0
6A 25 00 3C 15 0E 00 54 4A 33 00 3C 15 04 00 4C -- 0539F0
00 3C 15 1F 00 5C 66 6A 00 3C 15 17 00 1C 01 FE -- 053A00
00 3C 15 2E 00 44 24 E8 00 3C 15 26 00 5C 66 1E -- 053A10
00 3C 15 47 00 1C 68 21 00 3C 15 3C 00 4C D5 32 -- 053A20
```

```
00 3C 15 5C 00 4C 24 4D 00 3C 15 52 00 4C 24 A7 -- 053A30
00 3C 15 75 00 34 2E 9D 00 3C 15 69 00 14 95 7B -- 053A40
00 3C 15 88 00 1C 08 2A 00 3C 15 7F 00 1C 08 84 -- 053A50
00 3C 15 A3 00 5C 51 0B 00 3C 15 97 00 44 90 16 -- 053A60
00 3C 15 BA 00 4C 9E 80 00 3C 15 B1 00 4C F6 A2 -- 053A70
00 3C 15 CC 00 44 50 90 00 3C 15 C4 00 44 8E 1C -- 053A80
00 3C 15 E9 00 44 9C 33 00 3C 15 D7 00 44 8C D5 -- 053A90
00 3C 16 08 00 44 8D 71 00 3C 15 FE 00 14 64 80 -- 053AA0
00 3C 16 21 00 34 5C 9E 00 3C 16 18 00 44 8D D6 -- 053AB0
00 3C 16 44 00 14 00 00 00 3C 16 33 00 54 10 7C -- 053AC0
00 3C 16 59 00 44 8B 9B 00 3C 16 4F 00 44 91 BD -- 053AD0
00 3C 16 71 00 44 8C 36 00 3C 16 66 00 64 54 50 -- 053AE0
00 3C 16 8B 00 2C A2 6C 00 3C 16 7C 00 1C 50 62 -- 053AF0
00 3C 16 AD 00 2C 5E 91 00 3C 16 A1 00 44 BF A4 -- 053B00
00 3C 16 C6 00 2C 38 80 00 3C 16 BC 00 44 BD BD -- 053B10
00 3C 16 E0 00 34 C7 59 00 3C 16 D3 00 1C E3 4E -- 053B20
00 3C 17 04 00 5C 65 89 00 3C 16 F3 00 44 91 45 -- 053B30
00 3C 17 25 00 5C 65 B4 00 3C 17 0F 00 44 8F 19 -- 053B40
00 3C 17 46 00 54 42 2A 00 3C 17 35 00 54 38 28 -- 053B50
00 3C 17 5E 00 1C 6C 2E 00 3C 17 51 00 44 8B 09 -- 053B60
00 3C 17 7C 00 1C E3 60 00 3C 17 6D 00 5C 56 9A -- 053B70
00 3C 17 8E 00 54 48 BA 00 3C 17 85 00 44 E2 6A -- 053B80
00 3C 17 A8 00 34 6F 7B 00 3C 17 9E 00 44 99 94 -- 053B90
00 3C 17 BF 00 1C C1 52 00 3C 17 B2 00 34 72 C7 -- 053BA0
00 3C 17 D5 00 14 34 4A 00 3C 17 C6 00 34 82 8D -- 053BB0
00 3C 17 E7 00 2C 4C 50 00 3C 17 DF 00 2C 62 36 -- 053BC0
00 3C 17 F9 00 54 F0 94 00 3C 17 F2 00 1C E3 E6 -- 053BD0
00 3C 18 0D 00 4C 9E 46 00 3C 18 05 00 14 9A D0 -- 053BE0
00 3C 18 28 00 44 96 06 00 3C 18 19 00 64 54 90 -- 053BF0
18 45 00 5C EA 3F 00 3C 18 39 00 1C 70 17 01 FE -- 053C00
18 5C 00 1C E5 4F 00 3C 18 51 00 5C 0B 84 00 3C -- 053C10
18 77 00 34 68 EA 00 3C 18 67 00 14 4F B4 00 3C -- 053C20
18 93 00 34 7A 99 00 3C 18 87 00 14 B3 5C 00 3C -- 053C30
18 B0 00 14 17 C0 00 3C 18 9F 00 34 69 73 00 3C -- 053C40
18 CC 00 14 18 9A 00 3C 18 BE 00 5C 13 FD 00 3C -- 053C50
18 E0 00 34 AB 70 00 3C 18 D5 00 54 48 E1 00 3C -- 053C60
19 02 00 64 3B B4 00 3C 18 EF 00 4C F3 CF 00 3C -- 053C70
19 1F 00 64 3B A6 00 3C 19 0C 00 4C 9D 54 00 3C -- 053C80
19 3E 00 4C F3 40 00 3C 19 2C 00 14 AA 47 00 3C -- 053C90
19 5A 00 44 37 0A 00 3C 19 4A 00 1C 8A 93 00 3C -- 053CA0
19 75 00 54 4C 00 00 3C 19 67 00 14 76 79 00 3C -- 053CB0
19 93 00 14 4A 8C 00 3C 19 83 00 14 30 D8 00 3C -- 053CC0
19 B1 00 54 C8 1C 00 3C 19 A2 00 14 32 90 00 3C -- 053CD0
19 CD 00 2C C0 DC 00 3C 19 C1 00 4C CB 3C 00 3C -- 053CE0
19 EC 00 2C C0 F6 00 3C 19 DE 00 14 5A 3F 00 3C -- 053CF0
1A 0C 00 14 A6 EB 00 3C 19 FB 00 5C 14 A8 00 3C -- 053D00
1A 24 00 14 7D 64 00 3C 1A 18 00 14 7D 34 00 3C -- 053D10
1A 3C 00 54 EE F8 00 3C 1A 30 00 14 7D 94 00 3C -- 053D20
1A 58 00 44 E9 25 00 3C 1A 4A 00 44 E9 5C 00 3C -- 053D30

1A 73 00 44 E4 34 00 3C 1A 66 00 44 E8 EE 00 3C -- 053D40
1A 8D 00 44 E3 C6 00 3C 1A 80 00 44 E3 FD 00 3C -- 053D50
1A A9 00 44 EB B9 00 3C 1A 9B 00 44 EB F0 00 3C -- 053D60
1A C4 00 44 E6 C8 00 3C 1A B7 00 44 EB 82 00 3C -- 053D70
1A DE 00 44 E6 5A 00 3C 1A D1 00 44 E6 91 00 3C -- 053D80
1A FC 00 5C 63 C5 00 3C 1A EB 00 5C 08 E1 00 3C -- 053D90
1B 0A 00 5C 22 C5 00 3C 1B 01 00 5C 21 A9 00 3C -- 053DA0
02 2D 00 3C 7D AA 00 3C 1B 15 00 54 43 54 00 3C -- 053DB0
2F 43 49 4C 42 55 50 00 65 6D 65 74 73 79 73 70 -- 053DC0
75 43 00 31 65 76 72 75 43 00 00 45 4C 42 41 54 -- 053DD0
```

```
66 73 74 63 00 33 65 76 72 75 43 00 32 65 76 72 -- 053DE0
68 67 00 64 6E 65 70 73 75 73 00 66 73 74 63 00 -- 053DF0
75 73 65 72 00 74 73 6F 68 67 00 74 73 6F 01 FE -- 053E00
68 74 20 64 61 6F 6C 20 74 72 61 74 53 00 65 6D -- 053E10
23 20 54 55 4C 00 0A 20 2E 73 27 54 55 4C 20 65 -- 053E20
6C 20 73 69 20 64 25 23 20 70 65 73 20 64 25 20 -- 053E30
0A 20 2E 66 25 20 68 74 69 77 20 64 65 64 61 6F -- 053E40
27 54 55 4C 20 65 68 74 20 64 65 64 61 6F 4C 00 -- 053E50
20 64 61 6F 6C 20 74 72 61 74 53 00 0A 20 2E 73 -- 053E60
54 55 4C 00 0A 20 2E 73 27 54 55 4C 20 65 68 74 -- 053E70
73 69 20 64 25 23 20 70 65 73 20 64 25 20 23 20 -- 053E80
2E 66 25 20 68 74 69 77 20 64 65 64 61 6F 6C 20 -- 053E90
55 4C 20 65 68 74 20 64 65 64 61 6F 4C 00 0A 20 -- 053EA0
74 65 73 20 74 72 61 74 53 00 0A 20 2E 73 27 54 -- 053EB0
72 67 67 28 20 2E 73 27 54 55 4C 20 65 68 74 20 -- 053EC0
54 55 4C 20 65 68 54 00 0A 20 29 6F 63 70 75 6F -- 053ED0
72 67 67 28 20 2E 74 65 73 20 65 72 61 20 73 27 -- 053EE0
61 20 74 72 61 74 53 00 0A 20 29 6F 63 70 75 6F -- 053EF0
0A 20 72 65 66 66 75 62 20 65 74 61 63 6F 6C 6C -- 053F00
75 62 20 65 74 61 63 6F 6C 6C 61 20 64 6E 45 00 -- 053F10
69 66 20 72 65 66 66 75 42 00 0A 20 72 65 66 66 -- 053F20
72 63 20 73 65 6E 69 6C 20 6F 77 74 20 74 73 72 -- 053F30
69 20 72 65 66 66 75 42 00 0A 20 64 65 74 61 65 -- 053F40
72 65 66 66 75 42 00 0A 20 79 64 61 65 72 20 73 -- 053F50
20 6F 74 20 64 65 69 70 6F 63 20 64 25 20 23 20 -- 053F60
20 72 65 66 66 75 42 00 0A 20 67 6E 69 76 6F 6D -- 053F70
76 6F 6D 20 6F 74 20 64 65 69 70 6F 63 20 73 69 -- 053F80
6F 6C 6C 61 20 74 72 61 74 53 00 0A 20 67 6E 69 -- 053F90
6E 45 00 0A 20 72 65 66 66 75 62 20 65 74 61 63 -- 053FA0
75 62 20 64 25 20 65 74 61 63 6F 6C 6C 61 20 64 -- 053FB0
00 0A 64 25 20 66 6F 20 74 75 6F 20 72 65 66 66 -- 053FC0
20 64 65 64 61 6F 6C 20 73 69 20 61 68 70 6C 61 -- 053FD0
61 72 74 20 73 69 20 64 25 20 65 6E 69 4C 00 0A -- 053FE0
05 04 03 02 01 00 00 00 0A 20 64 72 65 66 73 6E -- 053FF0
00 00 00 00 0F 0E 0D 0C 0B 0A 09 08 07 06 01 FE -- 054000
00 00 00 00 00 00 00 00 00 00 00 00 00 00 00 00 -- 054010
00 00 00 00 00 00 00 00 00 00 00 00 00 00 00 00 -- 054020
00 00 00 00 00 00 00 00 00 00 00 00 00 00 00 00 -- 054030
00 00 00 00 00 00 00 00 00 00 00 00 00 00 00 00 -- 054040
00 00 00 00 00 00 00 00 00 00 00 00 00 00 00 00 -- 054050
00 00 00 00 00 00 00 00 00 00 00 00 00 00 00 00 -- 054060
00 00 00 00 00 00 00 00 00 00 00 00 00 00 00 00 -- 054070
00 00 00 00 00 00 00 00 00 00 00 00 00 00 00 00 -- 054080
00 00 00 00 00 00 00 00 00 00 00 00 00 00 00 00 -- 054090
00 00 00 00 00 00 00 00 00 00 00 00 00 00 00 00 -- 0540A0
00 00 00 00 00 00 00 00 00 00 00 00 00 00 00 00 -- 0540B0
00 00 00 00 00 00 00 00 00 00 00 00 00 00 00 00 -- 0540C0
00 00 00 00 00 00 00 00 00 00 00 00 00 00 00 00 -- 0540D0

00 00 00 00 00 00 00 00 00 00 00 00 00 00 00 00 -- 0540E0
00 00 00 00 00 00 00 00 00 00 00 00 00 00 00 00 -- 0540F0
00 00 00 00 00 00 00 00 00 00 00 00 00 00 00 00 -- 054100
00 00 00 00 00 00 00 00 00 00 00 00 00 00 00 00 -- 054110
00 00 00 00 00 00 00 00 00 00 00 00 00 00 00 00 -- 054120
00 00 00 00 00 00 00 00 00 00 00 00 00 00 00 00 -- 054130
00 00 00 00 00 00 00 00 00 00 00 00 00 00 00 00 -- 054140
00 00 00 00 00 00 00 00 00 00 00 00 00 00 00 00 -- 054150
00 00 00 00 00 00 00 00 00 00 00 00 00 00 00 00 -- 054160
00 00 00 00 00 00 00 00 00 00 00 00 00 00 00 00 -- 054170
00 00 00 00 00 00 00 00 00 00 00 00 00 00 00 00 -- 054180
```

```
00 00 00 00 00 00 00 00 00 00 00 00 00 00 00 00 -- 054190
00 00 00 00 00 00 00 00 00 00 00 00 00 00 00 00 -- 0541A0
00 00 00 00 00 00 00 00 00 00 00 00 00 00 00 00 -- 0541B0
00 00 00 00 00 00 00 00 00 00 00 00 00 00 00 00 -- 0541C0
00 00 00 00 00 00 00 00 00 00 00 00 00 00 00 00 -- 0541D0
00 00 00 00 00 00 00 00 00 00 00 00 00 00 00 00 -- 0541E0
00 00 00 00 00 00 00 00 00 00 00 00 00 00 00 00 -- 0541F0
00 00 00 00 00 00 00 00 00 00 00 00 00 00 01 FE -- 054200
00 00 00 00 00 00 00 00 00 00 00 00 00 00 00 00 -- 054210
00 00 00 00 00 00 00 00 00 00 00 00 00 00 00 00 -- 054220
00 00 00 00 00 00 00 00 00 00 00 00 00 00 00 00 -- 054230
00 00 00 00 00 00 00 00 00 00 00 00 00 00 00 00 -- 054240
00 00 00 00 00 00 00 00 00 00 00 00 00 00 00 00 -- 054250
00 00 00 00 00 00 00 00 00 00 00 00 00 00 00 00 -- 054260
00 00 00 00 00 00 00 00 00 00 00 00 00 00 00 00 -- 054270
00 00 00 00 00 00 00 00 00 00 00 00 00 00 00 00 -- 054280
00 00 00 00 00 00 00 00 00 00 00 00 00 00 00 00 -- 054290
00 00 00 00 00 00 00 00 00 00 00 00 00 00 00 00 -- 0542A0
00 00 00 00 00 00 00 00 00 00 00 00 00 00 00 00 -- 0542B0
00 00 00 00 00 00 00 00 00 00 00 00 00 00 00 00 -- 0542C0
00 00 00 00 00 00 00 00 00 00 00 00 00 00 00 00 -- 0542D0
00 00 00 00 00 00 00 00 00 00 00 00 00 00 00 00 -- 0542E0
00 00 00 00 00 00 00 00 00 00 00 00 00 00 00 00 -- 0542F0
00 00 00 00 00 00 00 00 00 00 00 00 00 00 00 00 -- 054300
00 00 00 00 00 00 00 00 00 00 00 00 00 00 00 00 -- 054310
00 00 00 00 00 00 00 00 00 00 00 00 00 00 00 00 -- 054320
00 00 00 00 00 00 00 00 00 00 00 00 00 00 00 00 -- 054330
00 00 00 00 00 00 00 00 00 00 00 00 00 00 00 00 -- 054340
00 00 00 00 00 00 00 00 00 00 00 00 00 00 00 00 -- 054350
00 00 00 00 00 00 00 00 00 00 00 00 00 00 00 00 -- 054360
00 00 00 00 00 00 00 00 00 00 00 00 00 00 00 00 -- 054370
00 00 00 00 00 00 00 00 00 00 00 00 00 00 00 00 -- 054380
00 00 00 00 00 00 00 00 00 00 00 00 00 00 00 00 -- 054390
00 00 00 00 00 00 00 00 00 00 00 00 00 00 00 00 -- 0543A0
00 00 00 00 00 00 00 00 00 00 00 00 00 00 00 00 -- 0543B0
00 00 00 00 00 00 00 00 00 00 00 00 00 00 00 00 -- 0543C0
00 00 00 00 00 00 00 00 00 00 00 00 00 00 00 00 -- 0543D0
00 00 00 00 00 00 00 00 00 00 00 00 00 00 00 00 -- 0543E0
00 00 00 00 00 00 00 00 00 00 00 00 00 00 00 00 -- 0543F0
00 00 00 00 00 00 00 00 00 00 00 00 00 00 01 FE -- 054400
00 00 00 00 00 00 00 00 00 00 00 00 00 00 00 00 -- 054410
00 00 00 00 00 00 00 00 00 00 00 00 00 00 00 00 -- 054420
00 00 00 00 00 00 00 00 00 00 00 00 00 00 00 00 -- 054430
00 00 00 00 00 00 00 00 00 00 00 00 00 00 00 00 -- 054440
00 00 00 00 00 00 00 00 00 00 00 00 00 00 00 00 -- 054450
00 00 00 00 00 00 00 00 00 00 00 00 00 00 00 00 -- 054460
00 00 00 00 00 00 00 00 00 00 00 00 00 00 00 00 -- 054470

00 00 00 00 00 00 00 00 00 00 00 00 00 00 00 00 -- 054480
00 00 00 00 00 00 00 00 00 00 00 00 00 00 00 00 -- 054490
00 00 00 00 00 00 00 00 00 00 00 00 00 00 00 00 -- 0544A0
00 00 00 00 00 00 00 00 00 00 00 00 00 00 00 00 -- 0544B0
00 00 00 00 00 00 00 00 00 00 00 00 00 00 00 00 -- 0544C0
00 00 00 00 00 00 00 00 00 00 00 00 00 00 00 00 -- 0544D0
00 00 00 00 00 00 00 00 00 00 00 00 00 00 00 00 -- 0544E0
00 00 00 00 00 00 00 00 00 00 00 00 00 00 00 00 -- 0544F0
00 00 00 00 00 00 00 00 00 00 00 00 00 00 00 00 -- 054500
00 00 00 00 00 00 00 00 00 00 00 00 00 00 00 00 -- 054510
00 00 00 00 00 00 00 00 00 00 00 00 00 00 00 00 -- 054520
00 00 00 00 00 00 00 00 00 00 00 00 00 00 00 00 -- 054530
```

```
00 00 00 00 00 00 00 00 00 00 00 00 00 00 00 00 -- 054540
00 00 00 00 00 00 00 00 00 00 00 00 00 00 00 00 -- 054550
00 00 00 00 00 00 00 00 00 00 00 00 00 00 00 00 -- 054560
00 00 00 00 00 00 00 00 00 00 00 00 00 00 00 00 -- 054570
00 00 00 00 00 00 00 00 00 00 00 00 00 00 00 00 -- 054580
00 00 00 00 00 00 00 00 00 00 00 00 00 00 00 00 -- 054590
00 00 00 00 00 00 00 00 00 00 00 00 00 00 00 00 -- 0545A0
00 00 00 00 00 00 00 00 00 00 00 00 00 00 00 00 -- 0545B0
00 00 00 00 00 00 00 00 00 00 00 00 00 00 00 00 -- 0545C0
00 00 00 00 00 00 00 00 00 00 00 00 00 00 00 00 -- 0545D0
00 00 00 00 00 00 00 00 00 00 00 00 00 00 00 00 -- 0545E0
00 00 00 00 00 00 00 00 00 00 00 00 00 00 00 00 -- 0545F0
00 00 00 00 00 00 00 00 00 00 00 00 00 00 01 FE -- 054600
00 00 00 00 00 00 00 00 00 00 00 00 00 00 00 00 -- 054610
00 00 00 00 00 00 00 00 00 00 00 00 00 00 00 00 -- 054620
00 00 00 00 00 00 00 00 00 00 00 00 00 00 00 00 -- 054630
00 00 00 00 00 00 00 00 00 00 00 00 00 00 00 00 -- 054640
00 00 00 00 00 00 00 00 00 00 00 00 00 00 00 00 -- 054650
00 00 00 00 00 00 00 00 00 00 00 00 00 00 00 00 -- 054660
00 00 00 00 00 00 00 00 00 00 00 00 00 00 00 00 -- 054670
00 00 00 00 00 00 00 00 00 00 00 00 00 00 00 00 -- 054680
00 00 00 00 00 00 00 00 00 00 00 00 00 00 00 00 -- 054690
00 00 00 00 00 00 00 00 00 00 00 00 00 00 00 00 -- 0546A0
00 00 00 00 00 00 00 00 00 00 00 00 00 00 00 00 -- 0546B0
00 00 00 00 00 00 00 00 00 00 00 00 00 00 00 00 -- 0546C0
00 00 00 00 00 00 00 00 00 00 00 00 00 00 00 00 -- 0546D0
00 00 00 00 00 00 00 00 00 00 00 00 00 00 00 00 -- 0546E0
00 00 00 00 00 00 00 00 00 00 00 00 00 00 00 00 -- 0546F0
00 00 00 00 00 00 00 00 00 00 00 00 00 00 00 00 -- 054700
00 00 00 00 00 00 00 00 00 00 00 00 00 00 00 00 -- 054710
00 00 00 00 00 00 00 00 00 00 00 00 00 00 00 00 -- 054720
00 00 00 00 00 00 00 00 00 00 00 00 00 00 00 00 -- 054730
00 00 00 00 00 00 00 00 00 00 00 00 00 00 00 00 -- 054740
00 00 00 00 00 00 00 00 00 00 00 00 00 00 00 00 -- 054750
00 00 00 00 00 00 00 00 00 00 00 00 00 00 00 00 -- 054760
00 00 00 00 00 00 00 00 00 00 00 00 00 00 00 00 -- 054770
00 00 00 00 00 00 00 00 00 00 00 00 00 00 00 00 -- 054780
00 00 00 00 00 00 00 00 00 00 00 00 00 00 00 00 -- 054790
00 00 00 00 00 00 00 00 00 00 00 00 00 00 00 00 -- 0547A0
00 00 00 00 00 00 00 00 00 00 00 00 00 00 00 00 -- 0547B0
00 00 00 00 00 00 00 00 00 00 00 00 00 00 00 00 -- 0547C0
00 00 00 00 00 00 00 00 00 00 00 00 00 00 00 00 -- 0547D0
00 00 00 00 00 00 00 00 00 00 00 00 00 00 00 00 -- 0547E0
00 00 00 00 00 00 00 00 00 00 00 00 00 00 00 00 -- 0547F0
00 00 00 00 00 00 00 00 00 00 00 00 00 00 01 FE -- 054800
00 00 00 00 00 00 00 00 00 00 00 00 00 00 00 00 -- 054810

00 00 00 00 00 00 00 00 00 00 00 00 00 00 00 00 -- 054820
00 00 00 00 00 00 00 00 00 00 00 00 00 00 00 00 -- 054830
00 00 00 00 00 00 00 00 00 00 00 00 00 00 00 00 -- 054840
00 00 00 00 00 00 00 00 00 00 00 00 00 00 00 00 -- 054850
00 00 00 00 00 00 00 00 00 00 00 00 00 00 00 00 -- 054860
00 00 00 00 00 00 00 00 00 00 00 00 00 00 00 00 -- 054870
00 00 00 00 00 00 00 00 00 00 00 00 00 00 00 00 -- 054880
00 00 00 00 00 00 00 00 00 00 00 00 00 00 00 00 -- 054890
00 00 00 00 00 00 00 00 00 00 00 00 00 00 00 00 -- 0548A0
00 00 00 00 00 00 00 00 00 00 00 00 00 00 00 00 -- 0548B0
00 00 00 00 00 00 00 00 00 00 00 00 00 00 00 00 -- 0548C0
00 00 00 00 00 00 00 00 00 00 00 00 00 00 00 00 -- 0548D0
00 00 00 00 00 00 00 00 00 00 00 00 00 00 00 00 -- 0548E0
```

```
00 00 00 00 00 00 00 00 00 00 00 00 00 00 00 00 -- 0548F0
00 00 00 00 00 00 00 00 00 00 00 00 00 00 00 00 -- 054900
00 00 00 00 00 00 00 00 00 00 00 00 00 00 00 00 -- 054910
00 00 00 00 00 00 00 00 00 00 00 00 00 00 00 00 -- 054920
00 00 00 00 00 00 00 00 00 00 00 00 00 00 00 00 -- 054930
00 00 00 00 00 00 00 00 00 00 00 00 00 00 00 00 -- 054940
00 00 00 00 00 00 00 00 00 00 00 00 00 00 00 00 -- 054950
00 00 00 00 00 00 00 00 00 00 00 00 00 00 00 00 -- 054960
00 00 00 00 00 00 00 00 00 00 00 00 00 00 00 00 -- 054970
00 00 00 00 00 00 00 00 00 00 00 00 00 00 00 00 -- 054980
00 00 00 00 00 00 00 00 00 00 00 00 00 00 00 00 -- 054990
00 00 00 00 00 00 00 00 00 00 00 00 00 00 00 00 -- 0549A0
00 00 00 00 00 00 00 00 00 00 00 00 00 00 00 00 -- 0549B0
00 00 00 00 00 00 00 00 00 00 00 00 00 00 00 00 -- 0549C0
00 00 00 00 00 00 00 00 00 00 00 00 00 00 00 00 -- 0549D0
00 00 00 00 00 00 00 00 00 00 00 00 00 00 00 00 -- 0549E0
00 00 00 00 00 00 00 00 00 00 00 00 00 00 00 00 -- 0549F0
00 00 00 00 00 00 00 00 00 00 00 00 00 00 01 FE -- 054A00
00 00 00 00 00 00 00 00 00 00 00 00 00 00 00 00 -- 054A10
00 00 00 00 00 00 00 00 00 00 00 00 00 00 00 00 -- 054A20
00 00 00 00 00 00 00 00 00 00 00 00 00 00 00 00 -- 054A30
00 00 00 00 00 00 00 00 00 00 00 00 00 00 00 00 -- 054A40
00 00 00 00 00 00 00 00 00 00 00 00 00 00 00 00 -- 054A50
00 00 00 00 00 00 00 00 00 00 00 00 00 00 00 00 -- 054A60
00 00 00 00 00 00 00 00 00 00 00 00 00 00 00 00 -- 054A70
00 00 00 00 00 00 00 00 00 00 00 00 00 00 00 00 -- 054A80
00 00 00 00 00 00 00 00 00 00 00 00 00 00 00 00 -- 054A90
00 00 00 00 00 00 00 00 00 00 00 00 00 00 00 00 -- 054AA0
00 00 00 00 00 00 00 00 00 00 00 00 00 00 00 00 -- 054AB0
00 00 00 00 00 00 00 00 00 00 00 00 00 00 00 00 -- 054AC0
00 00 00 00 00 00 00 00 00 00 00 00 00 00 00 00 -- 054AD0
00 00 00 00 00 00 00 00 00 00 00 00 00 00 00 00 -- 054AE0
00 00 00 00 00 00 00 00 00 00 00 00 00 00 00 00 -- 054AF0
00 00 00 00 00 00 00 00 00 00 00 00 00 00 00 00 -- 054B00
00 00 00 00 00 00 00 00 00 00 00 00 00 00 00 00 -- 054B10
00 00 00 00 00 00 00 00 00 00 00 00 00 00 00 00 -- 054B20
00 00 00 00 00 00 00 00 00 00 00 00 00 00 00 00 -- 054B30
00 00 00 00 00 00 00 00 00 00 00 00 00 00 00 00 -- 054B40
00 00 00 00 00 00 00 00 00 00 00 00 00 00 00 00 -- 054B50
00 00 00 00 00 00 00 00 00 00 00 00 00 00 00 00 -- 054B60
00 00 00 00 00 00 00 00 00 00 00 00 00 00 00 00 -- 054B70
00 00 00 00 00 00 00 00 00 00 00 00 00 00 00 00 -- 054B80
00 00 00 00 00 00 00 00 00 00 00 00 00 00 00 00 -- 054B90
00 00 00 00 00 00 00 00 00 00 00 00 00 00 00 00 -- 054BA0
00 00 00 00 00 00 00 00 00 00 00 00 00 00 00 00 -- 054BB0

00 00 00 00 00 00 00 00 00 00 00 00 00 00 00 00 -- 054BC0
00 00 00 00 00 00 00 00 00 00 00 00 00 00 00 00 -- 054BD0
00 00 00 00 00 00 00 00 00 00 00 00 00 00 00 00 -- 054BE0
00 00 00 00 00 00 00 00 00 00 00 00 00 00 00 00 -- 054BF0
00 00 00 00 00 00 00 00 00 00 00 00 00 00 01 FE -- 054C00
00 00 00 00 00 00 00 00 00 00 00 00 00 00 00 00 -- 054C10
00 00 00 00 00 00 00 00 00 00 00 00 00 00 00 00 -- 054C20
00 00 00 00 00 00 00 00 00 00 00 00 00 00 00 00 -- 054C30
00 00 00 00 00 00 00 00 00 00 00 00 00 00 00 00 -- 054C40
00 00 00 00 00 00 00 00 00 00 00 00 00 00 00 00 -- 054C50
00 00 00 00 00 00 00 00 00 00 00 00 00 00 00 00 -- 054C60
00 00 00 00 00 00 00 00 00 00 00 00 00 00 00 00 -- 054C70
00 00 00 00 00 00 00 00 00 00 00 00 00 00 00 00 -- 054C80
00 00 00 00 00 00 00 00 00 00 00 00 00 00 00 00 -- 054C90
```

```
00 00 00 00 00 00 00 00 00 00 00 00 00 00 00 00 -- 054CA0
00 00 00 00 00 00 00 00 00 00 00 00 00 00 00 00 -- 054CB0
00 00 00 00 00 00 00 00 00 00 00 00 00 00 00 00 -- 054CC0
00 00 00 00 00 00 00 00 00 00 00 00 00 00 00 00 -- 054CD0
00 00 00 00 00 00 00 00 00 00 00 00 00 00 00 00 -- 054CE0
00 00 00 00 00 00 00 00 00 00 00 00 00 00 00 00 -- 054CF0
00 00 00 00 00 00 00 00 00 00 00 00 00 00 00 00 -- 054D00
00 00 00 00 00 00 00 00 00 00 00 00 00 00 00 00 -- 054D10
00 00 00 00 00 00 00 00 00 00 00 00 00 00 00 00 -- 054D20
00 00 00 00 00 00 00 00 00 00 00 00 00 00 00 00 -- 054D30
00 00 00 00 00 00 00 00 00 00 00 00 00 00 00 00 -- 054D40
00 00 00 00 00 00 00 00 00 00 00 00 00 00 00 00 -- 054D50
00 00 00 00 00 00 00 00 00 00 00 00 00 00 00 00 -- 054D60
00 00 00 00 00 00 00 00 00 00 00 00 00 00 00 00 -- 054D70
00 00 00 00 00 00 00 00 00 00 00 00 00 00 00 00 -- 054D80
00 00 00 00 00 00 00 00 00 00 00 00 00 00 00 00 -- 054D90
00 00 00 00 00 00 00 00 00 00 00 00 00 00 00 00 -- 054DA0
00 00 00 00 00 00 00 00 00 00 00 00 00 00 00 00 -- 054DB0
00 00 00 00 00 00 00 00 00 00 00 00 00 00 00 00 -- 054DC0
00 00 00 00 00 00 00 00 00 00 00 00 00 00 00 00 -- 054DD0
00 00 00 00 00 00 00 00 00 00 00 00 00 00 00 00 -- 054DE0
00 00 00 00 00 00 00 00 00 00 00 00 00 00 00 00 -- 054DF0
00 00 00 00 00 00 00 00 00 00 00 00 00 00 01 FE -- 054E00
00 00 00 00 00 00 00 00 00 00 00 00 00 00 00 00 -- 054E10
00 00 00 00 00 00 00 00 00 00 00 00 00 00 00 00 -- 054E20
00 00 00 00 00 00 00 00 00 00 00 00 00 00 00 00 -- 054E30
00 00 00 00 00 00 00 00 00 00 00 00 00 00 00 00 -- 054E40
00 00 00 00 00 00 00 00 00 00 00 00 00 00 00 00 -- 054E50
00 00 00 00 00 00 00 00 00 00 00 00 00 00 00 00 -- 054E60
00 00 00 00 00 00 00 00 00 00 00 00 00 00 00 00 -- 054E70
00 00 00 00 00 00 00 00 00 00 00 00 00 00 00 00 -- 054E80
00 00 00 00 00 00 00 00 00 00 00 00 00 00 00 00 -- 054E90
00 00 00 00 00 00 00 00 00 00 00 00 00 00 00 00 -- 054EA0
00 00 00 00 00 00 00 00 00 00 00 00 00 00 00 00 -- 054EB0
00 00 00 00 00 00 00 00 00 00 00 00 00 00 00 00 -- 054EC0
00 00 00 00 00 00 00 00 00 00 00 00 00 00 00 00 -- 054ED0
00 00 00 00 00 00 00 00 00 00 00 00 00 00 00 00 -- 054EE0
00 00 00 00 00 00 00 00 00 00 00 00 00 00 00 00 -- 054EF0
00 00 00 00 00 00 00 00 00 00 00 00 00 00 00 00 -- 054F00
00 00 00 00 00 00 00 00 00 00 00 00 00 00 00 00 -- 054F10
00 00 00 00 00 00 00 00 00 00 00 00 00 00 00 00 -- 054F20
00 00 00 00 00 00 00 00 00 00 00 00 00 00 00 00 -- 054F30
00 00 00 00 00 00 00 00 00 00 00 00 00 00 00 00 -- 054F40
00 00 00 00 00 00 00 00 00 00 00 00 00 00 00 00 -- 054F50

00 00 00 00 00 00 00 00 00 00 00 00 00 00 00 00 -- 054F60
00 00 00 00 00 00 00 00 00 00 00 00 00 00 00 00 -- 054F70
00 00 00 00 00 00 00 00 00 00 00 00 00 00 00 00 -- 054F80
00 00 00 00 00 00 00 00 00 00 00 00 00 00 00 00 -- 054F90
00 00 00 00 00 00 00 00 00 00 00 00 00 00 00 00 -- 054FA0
00 00 00 00 00 00 00 00 00 00 00 00 00 00 00 00 -- 054FB0
00 00 00 00 00 00 00 00 00 00 00 00 00 00 00 00 -- 054FC0
00 00 00 00 00 00 00 00 00 00 00 00 00 00 00 00 -- 054FD0
00 00 00 00 00 00 00 00 00 00 00 00 00 00 00 00 -- 054FE0
00 00 00 00 00 00 00 00 00 00 00 00 00 00 00 00 -- 054FF0
00 00 00 00 00 00 00 00 00 00 00 00 00 00 01 FE -- 055000
00 00 00 00 00 00 00 00 00 00 00 00 00 00 00 00 -- 055010
00 00 00 00 00 00 00 00 00 00 00 00 00 00 00 00 -- 055020
00 00 00 00 00 00 00 00 00 00 00 00 00 00 00 00 -- 055030
00 00 00 00 00 00 00 00 00 00 00 00 00 00 00 00 -- 055040
```

```
00 00 00 00 00 00 00 00 00 00 00 00 00 00 00 00 -- 055050
00 00 00 00 00 00 00 00 00 00 00 00 00 00 00 00 -- 055060
00 00 00 00 00 00 00 00 00 00 00 00 00 00 00 00 -- 055070
00 00 00 00 00 00 00 00 00 00 00 00 00 00 00 00 -- 055080
00 00 00 00 00 00 00 00 00 00 00 00 00 00 00 00 -- 055090
00 00 00 00 00 00 00 00 00 00 00 00 00 00 00 00 -- 0550A0
00 00 00 00 00 00 00 00 00 00 00 00 00 00 00 00 -- 0550B0
00 00 00 00 00 00 00 00 00 00 00 00 00 00 00 00 -- 0550C0
00 00 00 00 00 00 00 00 00 00 00 00 00 00 00 00 -- 0550D0
00 00 00 00 00 00 00 00 00 00 00 00 00 00 00 00 -- 0550E0
00 00 00 00 00 00 00 00 00 00 00 00 00 00 00 00 -- 0550F0
00 00 00 00 00 00 00 00 00 00 00 00 00 00 00 00 -- 055100
00 00 00 00 00 00 00 00 00 00 00 00 00 00 00 00 -- 055110
00 00 00 00 00 00 00 00 00 00 00 00 00 00 00 00 -- 055120
00 00 00 00 00 00 00 00 00 00 00 00 00 00 00 00 -- 055130
00 00 00 00 00 00 00 00 00 00 00 00 00 00 00 00 -- 055140
00 00 00 00 00 00 00 00 00 00 00 00 00 00 00 00 -- 055150
00 00 00 00 00 00 00 00 00 00 00 00 00 00 00 00 -- 055160
00 00 00 00 00 00 00 00 00 00 00 00 00 00 00 00 -- 055170
00 00 00 00 00 00 00 00 00 00 00 00 00 00 00 00 -- 055180
00 00 00 00 00 00 00 00 00 00 00 00 00 00 00 00 -- 055190
00 00 00 00 00 00 00 00 00 00 00 00 00 00 00 00 -- 0551A0
00 00 00 00 00 00 00 00 00 00 00 00 00 00 00 00 -- 0551B0
00 00 00 00 00 00 00 00 00 00 00 00 00 00 00 00 -- 0551C0
00 00 00 00 00 00 00 00 00 00 00 00 00 00 00 00 -- 0551D0
00 00 00 00 00 00 00 00 00 00 00 00 00 00 00 00 -- 0551E0
00 00 00 00 00 00 00 00 00 00 00 00 00 00 00 00 -- 0551F0
00 00 00 00 00 00 00 00 00 00 00 00 00 00 01 FE -- 055200
00 00 00 00 00 00 00 00 00 00 00 00 00 00 00 00 -- 055210
00 00 00 00 00 00 00 00 00 00 00 00 00 00 00 00 -- 055220
00 00 00 00 00 00 00 00 00 00 00 00 00 00 00 00 -- 055230
00 00 00 00 00 00 00 00 00 00 00 00 00 00 00 00 -- 055240
00 00 00 00 00 00 00 00 00 00 00 00 00 00 00 00 -- 055250
00 00 00 00 00 00 00 00 00 00 00 00 00 00 00 00 -- 055260
00 00 00 00 00 00 00 00 00 00 00 00 00 00 00 00 -- 055270
00 00 00 00 00 00 00 00 00 00 00 00 00 00 00 00 -- 055280
00 00 00 00 00 00 00 00 00 00 00 00 00 00 00 00 -- 055290
00 00 00 00 00 00 00 00 00 00 00 00 00 00 00 00 -- 0552A0
00 00 00 00 00 00 00 00 00 00 00 00 00 00 00 00 -- 0552B0
00 00 00 00 00 00 00 00 00 00 00 00 00 00 00 00 -- 0552C0
00 00 00 00 00 00 00 00 00 00 00 00 00 00 00 00 -- 0552D0
00 00 00 00 00 00 00 00 00 00 00 00 00 00 00 00 -- 0552E0
00 00 00 00 00 00 00 00 00 00 00 00 00 00 00 00 -- 0552F0

00 00 00 00 00 00 00 00 00 00 00 00 00 00 00 00 -- 055300
00 00 00 00 00 00 00 00 00 00 00 00 00 00 00 00 -- 055310
00 00 00 00 00 00 00 00 00 00 00 00 00 00 00 00 -- 055320
00 00 00 00 00 00 00 00 00 00 00 00 00 00 00 00 -- 055330
00 00 00 00 00 00 00 00 00 00 00 00 00 00 00 00 -- 055340
00 00 00 00 00 00 00 00 00 00 00 00 00 00 00 00 -- 055350
00 00 00 00 00 00 00 00 00 00 00 00 00 00 00 00 -- 055360
00 00 00 00 00 00 00 00 00 00 00 00 00 00 00 00 -- 055370
00 00 00 00 00 00 00 00 00 00 00 00 00 00 00 00 -- 055380
00 00 00 00 00 00 00 00 00 00 00 00 00 00 00 00 -- 055390
00 00 00 00 00 00 00 00 00 00 00 00 00 00 00 00 -- 0553A0
00 00 00 00 00 00 00 00 00 00 00 00 00 00 00 00 -- 0553B0
00 00 00 00 00 00 00 00 00 00 00 00 00 00 00 00 -- 0553C0
00 00 00 00 00 00 00 00 00 00 00 00 00 00 00 00 -- 0553D0
00 00 00 00 00 00 00 00 00 00 00 00 00 00 00 00 -- 0553E0
00 00 00 00 00 00 00 00 00 00 00 00 00 00 00 00 -- 0553F0
```

```
00 00 00 00 00 00 00 00 00 00 00 00 00 00 01 FE -- 055400
00 00 00 00 00 00 00 00 00 00 00 00 00 00 00 00 -- 055410
00 00 00 00 00 00 00 00 00 00 00 00 00 00 00 00 -- 055420
00 00 00 00 00 00 00 00 00 00 00 00 00 00 00 00 -- 055430
00 00 00 00 00 00 00 00 00 00 00 00 00 00 00 00 -- 055440
00 00 00 00 00 00 00 00 00 00 00 00 00 00 00 00 -- 055450
00 00 00 00 00 00 00 00 00 00 00 00 00 00 00 00 -- 055460
00 00 00 00 00 00 00 00 00 00 00 00 00 00 00 00 -- 055470
00 00 00 00 00 00 00 00 00 00 00 00 00 00 00 00 -- 055480
00 00 00 00 00 00 00 00 00 00 00 00 00 00 00 00 -- 055490
00 00 00 00 00 00 00 00 00 00 00 00 00 00 00 00 -- 0554A0
00 00 00 00 00 00 00 00 00 00 00 00 00 00 00 00 -- 0554B0
00 00 00 00 00 00 00 00 00 00 00 00 00 00 00 00 -- 0554C0
00 00 00 00 00 00 00 00 00 00 00 00 00 00 00 00 -- 0554D0
00 00 00 00 00 00 00 00 00 00 00 00 00 00 00 00 -- 0554E0
00 00 00 00 00 00 00 00 00 00 00 00 00 00 00 00 -- 0554F0
00 00 00 00 00 00 00 00 00 00 00 00 00 00 00 00 -- 055500
00 00 00 00 00 00 00 00 00 00 00 00 00 00 00 00 -- 055510
00 00 00 00 00 00 00 00 00 00 00 00 00 00 00 00 -- 055520
00 00 00 00 00 00 00 00 00 00 00 00 00 00 00 00 -- 055530
00 00 00 00 00 00 00 00 00 00 00 00 00 00 00 00 -- 055540
00 00 00 00 00 00 00 00 00 00 00 00 00 00 00 00 -- 055550
00 00 00 00 00 00 00 00 00 00 00 00 00 00 00 00 -- 055560
00 00 00 00 00 00 00 00 00 00 00 00 00 00 00 00 -- 055570
00 00 00 00 00 00 00 00 00 00 00 00 00 00 00 00 -- 055580
00 00 00 00 00 00 00 00 00 00 00 00 00 00 00 00 -- 055590
00 00 00 00 00 00 00 00 00 00 00 00 00 00 00 00 -- 0555A0
00 00 00 00 00 00 00 00 00 00 00 00 00 00 00 00 -- 0555B0
00 00 00 00 00 00 00 00 00 00 00 00 00 00 00 00 -- 0555C0
00 00 00 00 00 00 00 00 00 00 00 00 00 00 00 00 -- 0555D0
00 00 00 00 00 00 00 00 00 00 00 00 00 00 00 00 -- 0555E0
00 00 00 00 00 00 00 00 00 00 00 00 00 00 00 00 -- 0555F0
00 00 00 00 00 00 00 00 00 00 00 00 00 00 01 FE -- 055600
00 00 00 00 00 00 00 00 00 00 00 00 00 00 00 00 -- 055610
00 00 00 00 00 00 00 00 00 00 00 00 00 00 00 00 -- 055620
00 00 00 00 00 00 00 00 00 00 00 00 00 00 00 00 -- 055630
00 00 00 00 00 00 00 00 00 00 00 00 00 00 00 00 -- 055640
00 00 00 00 00 00 00 00 00 00 00 00 00 00 00 00 -- 055650
00 00 00 00 00 00 00 00 00 00 00 00 00 00 00 00 -- 055660
00 00 00 00 00 00 00 00 00 00 00 00 00 00 00 00 -- 055670
00 00 00 00 00 00 00 00 00 00 00 00 00 00 00 00 -- 055680
00 00 00 00 00 00 00 00 00 00 00 00 00 00 00 00 -- 055690

00 00 00 00 00 00 00 00 00 00 00 00 00 00 00 00 -- 0556A0
00 00 00 00 00 00 00 00 00 00 00 00 00 00 00 00 -- 0556B0
00 00 00 00 00 00 00 00 00 00 00 00 00 00 00 00 -- 0556C0
00 00 00 00 00 00 00 00 00 00 00 00 00 00 00 00 -- 0556D0
00 00 00 00 00 00 00 00 00 00 00 00 00 00 00 00 -- 0556E0
00 00 00 00 00 00 00 00 00 00 00 00 00 00 00 00 -- 0556F0
00 00 00 00 00 00 00 00 00 00 00 00 00 00 00 00 -- 055700
00 00 00 00 00 00 00 00 00 00 00 00 00 00 00 00 -- 055710
00 00 00 00 00--00 00 00 00 00 00 00 00 00 00 00 -- 055720
00 00 00 00 00 00 00 00 00 00 00 00 00 00 00 00 -- 055730
00 00 00 00 00 00 00 00 00 00 00 00 00 00 00 00 -- 055740
00 00 00 00 00 00 00 00 00 00 00 00 00 00 00 00 -- 055750
00 00 00 00 00 00 00 00 00 00 00 00 00 00 00 00 -- 055760
00 00 00 00 00 00 00 00 00 00 00 00 00 00 00 00 -- 055770
00 00 00 00 00 00 00 00 00 00 00 00 00 00 00 00 -- 055780
00 00 00 00 00 00 00 00 00 00 00 00 00 00 00 00 -- 055790
00 00 00 00 00 00 00 00 00 00 00 00 00 00 00 00 -- 0557A0
```

```
00 00 00 00 00 00 00 00 00 00 00 00 00 00 00 00 -- 0557B0
00 00 00 00 00 00 00 00 00 00 00 00 00 00 00 00 -- 0557C0
00 00 00 00 00 00 00 00 00 00 00 00 00 00 00 00 -- 0557D0
00 00 00 00 00 00 00 00 00 00 00 00 00 00 00 00 -- 0557E0
00 00 00 00 00 00 00 00 00 00 00 00 00 00 00 00 -- 0557F0
00 00 00 00 00 00 00 00 00 00 00 00 00 00 01 FE -- 055800
00 00 00 00 00 00 00 00 00 00 00 00 00 00 00 00 -- 055810
00 00 00 00 00 00 00 00 00 00 00 00 00 00 00 00 -- 055820
00 00 00 00 00 00 00 00 00 00 00 00 00 00 00 00 -- 055830
00 00 00 00 00 00 00 00 00 00 00 00 00 00 00 00 -- 055840
00 00 00 00 00 00 00 00 00 00 00 00 00 00 00 00 -- 055850
00 00 00 00 00 00 00 00 00 00 00 00 00 00 00 00 -- 055860
00 00 00 00 00 00 00 00 00 00 00 00 00 00 00 00 -- 055870
00 00 00 00 00 00 00 00 00 00 00 00 00 00 00 00 -- 055880
00 00 00 00 00 00 00 00 00 00 00 00 00 00 00 00 -- 055890
00 00 00 00 00 00 00 00 00 00 00 00 00 00 00 00 -- 0558A0
00 00 00 00 00 00 00 00 00 00 00 00 00 00 00 00 -- 0558B0
00 00 00 00 00 00 00 00 00 00 00 00 00 00 00 00 -- 0558C0
00 00 00 00 00 00 00 00 00 00 00 00 00 00 00 00 -- 0558D0
00 00 00 00 00 00 00 00 00 00 00 00 00 00 00 00 -- 0558E0
00 00 00 00 00 00 00 00 00 00 00 00 00 00 00 00 -- 0558F0
00 00 00 00 00 00 00 00 00 00 00 00 00 00 00 00 -- 055900
00 00 00 00 00 00 00 00 00 00 00 00 00 00 00 00 -- 055910
00 00 00 00 00 00 00 00 00 00 00 00 00 00 00 00 -- 055920
00 00 00 00 00 00 00 00 00 00 00 00 00 00 00 00 -- 055930
00 00 00 00 00 00 00 00 00 00 00 00 00 00 00 00 -- 055940
00 00 00 00 00 00 00 00 00 00 00 00 00 00 00 00 -- 055950
00 00 00 00 00 00 00 00 00 00 00 00 00 00 00 00 -- 055960
00 00 00 00 00 00 00 00 00 00 00 00 00 00 00 00 -- 055970
00 00 00 00 00 00 00 00 00 00 00 00 00 00 00 00 -- 055980
00 00 00 00 00 00 00 00 00 00 00 00 00 00 00 00 -- 055990
00 00 00 00 00 00 00 00 00 00 00 00 00 00 00 00 -- 0559A0
00 00 00 00 00 00 00 00 00 00 00 00 00 00 00 00 -- 0559B0
00 00 00 00 00 00 00 00 00 00 00 00 00 00 00 00 -- 0559C0
00 00 00 00 00 00 00 00 00 00 00 00 00 00 00 00 -- 0559D0
00 00 00 00 00 00 00 00 00 00 00 00 00 00 00 00 -- 0559E0
00 00 00 00 00 00 00 00 00 00 00 00 00 00 00 00 -- 0559F0
00 00 00 00 00 00 00 00 00 00 00 00 00 00 01 FE -- 055A00
00 00 00 00 00 00 00 00 00 00 00 00 00 00 00 00 -- 055A10
00 00 00 00 00 00 00 00 00 00 00 00 00 00 00 00 -- 055A20
00 00 00 00 00 00 00 00 00 00 00 00 00 00 00 00 -- 055A30
00 00 00 00 00 00 00 00 00 00 00 00 00 00 00 00 -- 055A40
00 00 00 00 00 00 00 00 00 00 00 00 00 00 00 00 -- 055A50
00 00 00 00 00 00 00 00 00 00 00 00 00 00 00 00 -- 055A60
00 00 00 00 00 00 00 00 00 00 00 00 00 00 00 00 -- 055A70
00 00 00 00 00 00 00 00 00 00 00 00 00 00 00 00 -- 055A80
00 00 00 00 00 00 00 00 00 00 00 00 00 00 00 00 -- 055A90
00 00 00 00 00 00 00 00 00 00 00 00 00 00 00 00 -- 055AA0
00 00 00 00 00 00 00 00 00 00 00 00 00 00 00 00 -- 055AB0
00 00 00 00 00 00 00 00 00 00 00 00 00 00 00 00 -- 055AC0
00 00 00 00 00 00 00 00 00 00 00 00 00 00 00 00 -- 055AD0
00 00 00 00 00 00 00 00 00 00 00 00 00 00 00 00 -- 055AE0
00 00 00 00 00 00 00 00 00 00 00 00 00 00 00 00 -- 055AF0
00 00 00 00 00 00 00 00 00 00 00 00 00 00 00 00 -- 055B00
00 00 00 00 00 00 00 00 00 00 00 00 00 00 00 00 -- 055B10
00 00 00 00 00 00 00 00 00 00 00 00 00 00 00 00 -- 055B20
00 00 00 00 00 00 00 00 00 00 00 00 00 00 00 00 -- 055B30
00 00 00 00 00 00 00 00 00 00 00 00 00 00 00 00 -- 055B40
00 00 00 00 00 00 00 00 00 00 00 00 00 00 00 00 -- 055B50
```

```
00 00 00 00 00 00 00 00 00 00 00 00 00 00 00 00 -- 055B60
00 00 00 00 00 00 00 00 00 00 00 00 00 00 00 00 -- 055B70
00 00 00 00 00 00 00 00 00 00 00 00 00 00 00 00 -- 055B80
00 00 00 00 00 00 00 00 00 00 00 00 00 00 00 00 -- 055B90
00 00 00 00 00 00 00 00 00 00 00 00 00 00 00 00 -- 055BA0
00 00 00 00 00 00 00 00 00 00 00 00 00 00 00 00 -- 055BB0
00 00 00 00 00 00 00 00 00 00 00 00 00 00 00 00 -- 055BC0
00 00 00 00 00 00 00 00 00 00 00 00 00 00 00 00 -- 055BD0
00 00 00 00 00 00 00 00 00 00 00 00 00 00 00 00 -- 055BE0
00 00 00 00 00 00 00 00 00 00 00 00 00 00 00 00 -- 055BF0
00 00 00 00 00 00 00 00 00 00 00 00 00 00 01 FE -- 055C00
00 00 00 00 00 00 00 00 00 00 00 00 00 00 00 00 -- 055C10
00 00 00 00 00 00 00 00 00 00 00 00 00 00 00 00 -- 055C20
00 00 00 00 00 00 00 00 00 00 00 00 00 00 00 00 -- 055C30
00 00 00 00 00 00 00 00 00 00 00 00 00 00 00 00 -- 055C40
00 00 00 00 00 00 00 00 00 00 00 00 00 00 00 00 -- 055C50
00 00 00 00 00 00 00 00 00 00 00 00 00 00 00 00 -- 055C60
00 00 00 00 00 00 00 00 00 00 00 00 00 00 00 00 -- 055C70
00 00 00 00 00 00 00 00 00 00 00 00 00 00 00 00 -- 055C80
00 00 00 00 00 00 00 00 00 00 00 00 00 00 00 00 -- 055C90
00 00 00 00 00 00 00 00 00 00 00 00 00 00 00 00 -- 055CA0
00 00 00 00 00 00 00 00 00 00 00 00 00 00 00 00 -- 055CB0
00 00 00 00 00 00 00 00 00 00 00 00 00 00 00 00 -- 055CC0
00 00 00 00 00 00 00 00 00 00 00 00 00 00 00 00 -- 055CD0
00 00 00 00 00 00 00 00 00 00 00 00 00 00 00 00 -- 055CE0
00 00 00 00 00 00 00 00 00 00 00 00 00 00 00 00 -- 055CF0
00 00 00 00 00 00 00 00 00 00 00 00 00 00 00 00 -- 055D00
00 00 00 00 00 00 00 00 00 00 00 00 00 00 00 00 -- 055D10
00 00 00 00 00 00 00 00 00 00 00 00 00 00 00 00 -- 055D20
00 00 00 00 00 00 00 00 00 00 00 00 00 00 00 00 -- 055D30
00 00 00 00 00 00 00 00 00 00 00 00 00 00 00 00 -- 055D40
00 00 00 00 00 00 00 00 00 00 00 00 00 00 00 00 -- 055D50
00 00 00 00 00 00 00 00 00 00 00 00 00 00 00 00 -- 055D60
00 00 00 00 00 00 00 00 00 00 00 00 00 00 00 00 -- 055D70
00 00 00 00 00 00 00 00 00 00 00 00 00 00 00 00 -- 055D80
00 00 00 00 00 00 00 00 00 00 00 00 00 00 00 00 -- 055D90
00 00 00 00 00 00 00 00 00 00 00 00 00 00 00 00 -- 055DA0
00 00 00 00 00 00 00 00 00 00 00 00 00 00 00 00 -- 055DB0
00 00 00 00 00 00 00 00 00 00 00 00 00 00 00 00 -- 055DC0
00 00 00 00 00 00 00 00 00 00 00 00 00 00 00 00 -- 055DD0

00 00 00 00 00 00 00 00 00 00 00 00 00 00 00 00 -- 055DE0
00 00 00 00 00 00 00 00 00 00 00 00 00 00 00 00 -- 055DF0
00 00 00 00 00 00 00 00 00 00 00 00 00 00 01 FE -- 055E00
00 00 00 00 00 00 00 00 00 00 00 00 00 00 00 00 -- 055E10
00 00 00 00 00 00 00 00 00 00 00 00 00 00 00 00 -- 055E20
00 00 00 00 00 00 00 00 00 00 00 00 00 00 00 00 -- 055E30
00 00 00 00 00 00 00 00 00 00 00 00 00 00 00 00 -- 055E40
00 00 00 00 00 00 00 00 00 00 00 00 00 00 00 00 -- 055E50
00 00 00 00 00 00 00 00 00 00 00 00 00 00 00 00 -- 055E60
00 00 00 00 00 00 00 00 00 00 00 00 00 00 00 00 -- 055E70
00 00 00 00 00 00 00 00 00 00 00 00 00 00 00 00 -- 055E80
00 00 00 00 00 00 00 00 00 00 00 00 00 00 00 00 -- 055E90
00 00 00 00 00 00 00 00 00 00 00 00 00 00 00 00 -- 055EA0
00 00 00 00 00 00 00 00 00 00 00 00 00 00 00 00 -- 055EB0
00 00 00 00 00 00 00 00 00 00 00 00 00 00 00 00 -- 055EC0
00 00 00 00 00 00 00 00 00 00 00 00 00 00 00 00 -- 055ED0
00 00 00 00 00 00 00 00 00 00 00 00 00 00 00 00 -- 055EE0
00 00 00 00 00 00 00 00 00 00 00 00 00 00 00 00 -- 055EF0
00 00 00 00 00 00 00 00 00 00 00 00 00 00 00 00 -- 055F00
```

```
00 00 00 00 00 00 00 00 00 00 00 00 00 00 00 00 -- 055F10
00 00 00 00 00 00 00 00 00 00 00 00 00 00 00 00 -- 055F20
00 00 00 00 00 00 00 00 00 00 00 00 00 00 00 00 -- 055F30
00 00 00 00 00 00 00 00 00 00 00 00 00 00 00 00 -- 055F40
00 00 00 00 00 00 00 00 00 00 00 00 00 00 00 00 -- 055F50
00 00 00 00 00 00 00 00 00 00 00 00 00 00 00 00 -- 055F60
00 00 00 00 00 00 00 00 00 00 00 00 00 00 00 00 -- 055F70
00 00 00 00 00 00 00 00 00 00 00 00 00 00 00 00 -- 055F80
00 00 00 00 00 00 00 00 00 00 00 00 00 00 00 00 -- 055F90
00 00 00 00 00 00 00 00 00 00 00 00 00 00 00 00 -- 055FA0
00 00 00 00 00 00 00 00 00 00 00 00 00 00 00 00 -- 055FB0
00 00 00 00 00 00 00 00 00 00 00 00 00 00 00 00 -- 055FC0
00 00 00 00 00 00 00 00 00 00 00 00 00 00 00 00 -- 055FD0
00 00 00 00 00 00 00 00 00 00 00 00 00 00 00 00 -- 055FE0
00 00 00 00 00 00 00 00 00 00 00 00 00 00 00 00 -- 055FF0
00 00 00 00 00 00 00 00 00 00 00 00 00 00 01 FE -- 056000
00 00 00 00 00 00 00 00 00 00 00 00 00 00 00 00 -- 056010
00 00 00 00 00 00 00 00 00 00 00 00 00 00 00 00 -- 056020
00 00 00 00 00 00 00 00 00 00 00 00 00 00 00 00 -- 056030
00 00 00 00 00 00 00 00 00 00 00 00 00 00 00 00 -- 056040
00 00 00 00 00 00 00 00 00 00 00 00 00 00 00 00 -- 056050
00 00 00 00 00 00 00 00 00 00 00 00 00 00 00 00 -- 056060
00 00 00 00 00 00 00 00 00 00 00 00 00 00 00 00 -- 056070
00 00 00 00 00 00 00 00 00 00 00 00 00 00 00 00 -- 056080
00 00 00 00 00 00 00 00 00 00 00 00 00 00 00 00 -- 056090
00 00 00 00 00 00 00 00 00 00 00 00 00 00 00 00 -- 0560A0
00 00 00 00 00 00 00 00 00 00 00 00 00 00 00 00 -- 0560B0
00 00 00 00 00 00 00 00 00 00 00 00 00 00 00 00 -- 0560C0
00 00 00 00 00 00 00 00 00 00 00 00 00 00 00 00 -- 0560D0
00 00 00 00 00 00 00 00 00 00 00 00 00 00 00 00 -- 0560E0
00 00 00 00 00 00 00 00 00 00 00 00 00 00 00 00 -- 0560F0
00 00 00 00 00 00 00 00 00 00 00 00 00 00 00 00 -- 056100
00 00 00 00 00 00 00 00 00 00 00 00 00 00 00 00 -- 056110
00 00 00 00 00 00 00 00 00 00 00 00 00 00 00 00 -- 056120
00 00 00 00 00 00 00 00 00 00 00 00 00 00 00 00 -- 056130
00 00 00 00 00 00 00 00 00 00 00 00 00 00 00 00 -- 056140
00 00 00 00 00 00 00 00 00 00 00 00 00 00 00 00 -- 056150
00 00 00 00 00 00 00 00 00 00 00 00 00 00 00 00 -- 056160
00 00 00 00 00 00 00 00 00 00 00 00 00 00 00 00 -- 056170

00 00 00 00 00 00 00 00 00 00 00 00 00 00 00 00 -- 056180
00 00 00 00 00 00 00 00 00 00 00 00 00 00 00 00 -- 056190
00 00 00 00 00 00 00 00 00 00 00 00 00 00 00 00 -- 0561A0
00 00 00 00 00 00 00 00 00 00 00 00 00 00 00 00 -- 0561B0
00 00 00 00 00 00 00 00 00 00 00 00 00 00 00 00 -- 0561C0
00 00 00 00 00 00 00 00 00 00 00 00 00 00 00 00 -- 0561D0
00 00 00 00 00 00 00 00 00 00 00 00 00 00 00 00 -- 0561E0
00 00 00 00 00 00 00 00 00 00 00 00 00 00 00 00 -- 0561F0
00 00 00 00 00 00 00 00 00 00 00 00 00 00 01 FE -- 056200
00 00 00 00 00 00 00 00 00 00 00 00 00 00 00 00 -- 056210
00 00 00 00 00 00 00 00 00 00 00 00 00 00 00 00 -- 056220
00 00 00 00 00 00 00 00 00 00 00 00 00 00 00 00 -- 056230
00 03 00 32 00 00 00 00 00 00 00 00 00 00 00 00 -- 056240
00 00 00 00 00 00 00 00 00 00 00 00 00 00 00 04 -- 056250
00 00 00 00 00 00 00 00 00 00 00 00 00 00 00 00 -- 056260
00 00 00 00 00 00 00 00 00 00 00 00 00 00 00 00 -- 056270
00 00 00 00 00 00 00 00 00 00 00 00 00 00 00 00 -- 056280
00 00 00 00 00 00 00 00 00 00 00 00 00 00 00 00 -- 056290
00 00 00 00 00 00 00 00 00 00 00 00 00 00 00 00 -- 0562A0
00 00 00 00 00 00 00 00 00 00 00 00 00 00 00 00 -- 0562B0
```

```
00 00 00 00 00 00 00 00 00 00 00 00 00 00 00 00 -- 0562C0
00 00 00 00 00 00 00 00 00 00 00 00 00 00 00 00 -- 0562D0
00 00 00 00 00 00 00 00 00 00 00 00 00 00 00 00 -- 0562E0
00 00 00 00 00 00 00 00 00 00 00 00 00 00 00 00 -- 0562F0
00 00 00 00 00 00 00 00 00 00 00 00 00 00 00 00 -- 056300
00 00 00 00 00 00 00 00 00 00 00 00 00 00 00 00 -- 056310
00 00 00 00 00 00 00 00 00 00 00 00 00 00 00 00 -- 056320
00 00 00 00 00 00 00 00 00 00 00 00 00 00 00 00 -- 056330
00 00 00 00 00 00 00 00 00 00 00 00 00 00 00 00 -- 056340
00 00 00 00 00 00 00 00 00 00 00 00 00 00 00 00 -- 056350
00 00 00 00 00 00 00 00 00 00 00 00 00 00 00 00 -- 056360
00 00 00 00 00 00 00 00 00 00 00 00 00 00 00 00 -- 056370
00 00 00 00 00 00 00 00 00 00 00 00 00 00 00 00 -- 056380
00 00 00 00 00 00 00 00 00 00 00 00 00 00 00 00 -- 056390
00 00 00 00 00 00 00 00 00 00 00 00 00 00 00 00 -- 0563A0
00 00 00 00 00 00 00 00 00 00 00 00 00 00 00 00 -- 0563B0
00 00 00 00 00 00 00 00 00 00 00 00 00 00 00 00 -- 0563C0
00 00 00 00 00 00 00 00 00 00 00 00 00 00 00 00 -- 0563D0
00 00 00 00 00 00 00 00 00 00 00 00 00 00 00 00 -- 0563E0
00 00 00 00 00 00 00 00 00 00 00 00 00 00 00 00 -- 0563F0
00 00 00 00 00 00 00 00 00 00 00 00 00 00 01 FE -- 056400
00 00 00 00 00 00 00 00 00 00 00 00 00 00 00 00 -- 056410
00 00 00 00 00 00 00 00 00 00 00 00 00 00 00 00 -- 056420
00 00 00 00 00 00 00 00 00 00 00 00 00 00 00 00 -- 056430
00 00 00 00 00 00 00 00 00 00 00 00 00 00 00 00 -- 056440
00 00 00 00 00 00 00 00 00 00 00 00 00 00 00 00 -- 056450
00 00 00 00 00 00 00 00 00 00 00 00 00 00 00 00 -- 056460
00 00 00 00 00 00 00 00 00 00 00 00 00 00 00 00 -- 056470
00 00 00 00 00 00 00 00 00 00 00 00 00 00 00 00 -- 056480
00 00 00 00 00 00 00 00 00 00 00 00 00 00 00 00 -- 056490
00 00 00 00 00 00 00 00 00 00 00 00 00 00 00 00 -- 0564A0
00 00 00 00 00 00 00 00 00 00 00 00 00 00 00 00 -- 0564B0
00 00 00 00 00 00 00 00 00 00 00 00 00 00 00 00 -- 0564C0
00 00 00 00 00 00 00 00 00 00 00 00 00 00 00 00 -- 0564D0
00 00 00 00 00 00 00 00 00 00 00 00 00 00 00 00 -- 0564E0
00 00 00 00 00 00 00 00 00 00 00 00 00 00 00 00 -- 0564F0
00 00 00 00 00 00 00 00 00 00 00 00 00 00 00 00 -- 056500
00 00 00 00 00 00 00 00 00 00 00 00 00 00 00 00 -- 056510

00 00 00 00 00 00 00 00 00 00 00 00 00 00 00 00 -- 056520
00 00 00 00 00 00 00 00 00 00 00 00 00 00 00 00 -- 056530
00 00 00 00 00 00 00 00 00 00 00 00 00 00 00 00 -- 056540
00 00 00 00 00 00 00 00 00 00 00 00 00 00 00 00 -- 056550
00 00 00 00 00 00 00 00 00 00 00 00 00 00 00 00 -- 056560
00 00 00 00 00 00 00 00 00 00 00 00 00 00 00 00 -- 056570
00 00 00 00 00 00 00 00 00 00 00 00 00 00 00 00 -- 056580
00 00 00 00 00 00 00 00 00 00 00 00 00 00 00 00 -- 056590
00 00 00 00 00 00 00 00 00 00 00 00 00 00 00 00 -- 0565A0
00 00 00 00 00 00 00 00 00 00 00 00 00 00 00 00 -- 0565B0
00 00 00 00 00 00 00 00 00 00 00 00 00 00 00 00 -- 0565C0
00 00 00 00 00 00 00 00 00 00 00 00 00 00 00 00 -- 0565D0
00 00 00 00 00 00 00 00 00 00 00 00 00 00 00 00 -- 0565E0
00 00 00 00 00 00 00 00 00 00 00 00 00 00 00 00 -- 0565F0
00 00 00 00 00 00 00 00 00 00 00 00 00 00 01 FE -- 056600
00 00 00 00 00 00 00 00 00 00 00 00 00 00 00 00 -- 056610
00 00 00 00 00 00 00 00 00 00 00 00 00 00 00 00 -- 056620
00 00 00 00 00 00 00 00 00 00 00 00 00 00 00 00 -- 056630
00 00 00 00 00 00 00 00 00 00 00 00 00 00 00 00 -- 056640
00 00 00 00 00 00 00 00 00 00 00 00 00 00 00 00 -- 056650
00 00 00 00 00 00 00 00 00 00 00 00 00 00 00 00 -- 056660
```

```
00 00 00 00 00 00 00 00 00 00 00 00 00 00 00 00 -- 056670
00 00 00 00 00 00 00 00 00 00 00 00 00 00 00 00 -- 056680
00 00 00 00 00 00 00 00 00 00 00 00 00 00 00 00 -- 056690
00 00 00 00 00 00 00 00 00 00 00 00 00 00 00 00 -- 0566A0
00 00 00 00 00 00 00 00 00 00 00 00 00 00 00 00 -- 0566B0
00 00 00 00 00 00 00 00 00 00 00 00 00 00 00 00 -- 0566C0
00 00 00 00 00 00 00 00 00 00 00 00 00 00 00 00 -- 0566D0
00 00 00 00 00 00 00 00 00 00 00 00 00 00 00 00 -- 0566E0
00 00 00 00 00 00 00 00 00 00 00 00 00 00 00 00 -- 0566F0
00 00 00 00 00 00 00 00 00 00 00 00 00 00 00 00 -- 056700
00 00 00 00 00 00 00 00 00 00 00 00 00 00 00 00 -- 056710
00 00 00 00 00 00 00 00 00 00 00 00 00 00 00 00 -- 056720
00 00 00 00 00 00 00 00 00 00 00 00 00 00 00 00 -- 056730
00 00 00 00 00 00 00 00 00 00 00 00 00 00 00 00 -- 056740
00 00 00 00 00 00 00 00 00 00 00 00 00 00 00 00 -- 056750
00 00 00 00 00 00 00 00 00 00 00 00 00 00 00 00 -- 056760
00 00 00 00 00 00 00 00 00 00 00 00 00 00 00 00 -- 056770
00 00 00 00 00 00 00 00 00 00 00 00 00 00 00 00 -- 056780
00 00 00 00 00 00 00 00 00 00 00 00 00 00 00 00 -- 056790
00 00 00 00 00 00 00 00 00 00 00 00 00 00 00 00 -- 0567A0
00 00 00 00 00 00 00 00 00 00 00 00 00 00 00 00 -- 0567B0
00 00 00 00 00 00 00 00 00 00 00 00 00 00 00 00 -- 0567C0
00 00 00 00 00 00 00 00 00 00 00 00 00 00 00 00 -- 0567D0
00 00 00 00 00 00 00 00 00 00 00 00 00 00 00 00 -- 0567E0
00 00 00 00 00 00 00 00 00 00 00 00 00 00 00 00 -- 0567F0
00 00 00 00 00 00 00 00 00 00 00 00 00 00 01 FE -- 056800
00 00 00 00 00 00 00 00 00 00 00 00 00 00 00 00 -- 056810
00 00 00 00 00 00 00 00 00 00 00 00 00 00 00 00 -- 056820
00 00 00 00 00 00 00 00 00 00 00 00 00 00 00 00 -- 056830
00 00 00 00 00 00 00 00 00 00 00 00 00 00 00 00 -- 056840
00 00 00 00 00 00 00 00 00 00 00 00 00 00 00 00 -- 056850
00 00 00 00 00 00 00 00 00 00 00 00 00 00 00 00 -- 056860
00 00 00 00 00 00 00 00 00 00 00 00 00 00 00 00 -- 056870
00 00 00 00 00 00 00 00 00 00 00 00 00 00 00 00 -- 056880
00 00 00 00 00 00 00 00 00 00 00 00 00 00 00 00 -- 056890
00 00 00 00 00 00 00 00 00 00 00 00 00 00 00 00 -- 0568A0
00 00 00 00 00 00 00 00 00 00 00 00 00 00 00 00 -- 0568B0

00 00 00 00 00 00 00 00 00 00 00 00 00 00 00 00 -- 0568C0
00 00 00 00 00 00 00 00 00 00 00 00 00 00 00 00 -- 0568D0
00 00 00 00 00 00 00 00 00 00 00 00 00 00 00 00 -- 0568E0
00 00 00 00 00 00 00 00 00 00 00 00 00 00 00 00 -- 0568F0
00 00 00 00 00 00 00 00 00 00 00 00 00 00 00 00 -- 056900
00 00 00 00 00 00 00 00 00 00 00 00 00 00 00 00 -- 056910
00 00 00 00 00 00 00 00 00 00 00 00 00 00 00 00 -- 056920
00 00 00 00 00 00 00 00 00 00 00 00 00 00 00 00 -- 056930
00 00 00 00 00 00 00 00 00 00 00 00 00 00 00 00 -- 056940
00 00 00 00 00 00 00 00 00 00 00 00 00 00 00 00 -- 056950
00 00 00 00 00 00 00 00 00 00 00 00 00 00 00 00 -- 056960
00 00 00 00 00 00 00 00 00 00 00 00 00 00 00 00 -- 056970
00 00 00 00 00 00 00 00 00 00 00 00 00 00 00 00 -- 056980
00 00 00 00 00 00 00 00 00 00 00 00 00 00 00 00 -- 056990
00 00 00 00 00 00 00 00 00 00 00 00 00 00 00 00 -- 0569A0
00 00 00 00 00 00 00 00 00 00 00 00 00 00 00 00 -- 0569B0
00 00 00 00 00 00 00 00 00 00 00 00 00 00 00 00 -- 0569C0
00 00 00 00 00 00 00 00 00 00 00 00 00 00 00 00 -- 0569D0
00 00 00 00 00 00 00 00 00 00 00 00 00 00 00 00 -- 0569E0
00 00 00 00 00 00 00 00 00 00 00 00 00 00 00 00 -- 0569F0
00 00 00 00 00 00 00 00 00 00 00 00 00 00 01 FE -- 056A00
00 00 00 00 00 00 00 00 00 00 00 00 00 00 00 00 -- 056A10
```

```
00 00 00 00 00 00 00 00 00 00 00 00 00 00 00 00 -- 056A20
00 00 00 00 00 00 00 00 00 00 00 00 00 00 00 00 -- 056A30
00 00 00 00 00 00 00 00 00 00 00 00 00 00 00 00 -- 056A40
00 00 00 00 00 00 00 00 00 00 00 00 00 00 00 00 -- 056A50
00 00 00 00 00 00 00 00 00 00 00 00 00 00 00 00 -- 056A60
00 00 00 00 00 00 00 00 00 00 00 00 00 00 00 00 -- 056A70
00 00 00 00 00 00 00 00 00 00 00 00 00 00 00 00 -- 056A80
00 00 00 00 00 00 00 00 00 00 00 00 00 00 00 00 -- 056A90
00 00 00 00 00 00 00 00 00 00 00 00 00 00 00 00 -- 056AA0
00 00 00 00 00 00 00 00 00 00 00 00 00 00 00 00 -- 056AB0
00 00 00 00 00 00 00 00 00 00 00 00 00 00 00 00 -- 056AC0
00 00 00 00 00 00 00 00 00 00 00 00 00 00 00 00 -- 056AD0
00 00 00 00 00 00 00 00 00 00 00 00 00 00 00 00 -- 056AE0
00 00 00 00 00 00 00 00 00 00 00 00 00 00 00 00 -- 056AF0
00 00 00 00 00 00 00 00 00 00 00 00 00 00 00 00 -- 056B00
00 00 00 00 00 00 00 00 00 00 00 00 00 00 00 00 -- 056B10
00 00 00 00 00 00 00 00 00 00 00 00 00 00 00 00 -- 056B20
00 00 00 00 00 00 00 00 00 00 00 00 00 00 00 00 -- 056B30
00 00 00 00 00 00 00 00 00 00 00 00 00 00 00 00 -- 056B40
00 00 00 00 00 00 00 00 00 00 00 00 00 00 00 00 -- 056B50
00 00 00 00 00 00 00 00 00 00 00 00 00 00 00 00 -- 056B60
00 00 00 00 00 00 00 00 00 00 00 00 00 00 00 00 -- 056B70
00 00 00 00 00 00 00 00 00 00 00 00 00 00 00 00 -- 056B80
00 00 00 00 00 00 00 00 00 00 00 00 00 00 00 00 -- 056B90
00 00 00 00 00 00 00 00 00 00 00 00 00 00 00 00 -- 056BA0
00 00 00 00 00 00 00 00 00 00 00 00 00 00 00 00 -- 056BB0
00 00 00 00 00 00 00 00 00 00 00 00 00 00 00 00 -- 056BC0
00 00 00 00 00 00 00 00 00 00 00 00 00 00 00 00 -- 056BD0
00 00 00 00 00 00 00 00 00 00 00 00 00 00 00 00 -- 056BE0
00 00 00 00 00 00 00 00 00 00 00 00 00 00 00 00 -- 056BF0
00 00 00 00 00 00 00 00 00 00 00 00 00 00 01 FE -- 056C00
00 00 00 00 00 00 00 00 00 00 00 00 00 00 00 00 -- 056C10
00 00 00 00 00 00 00 00 00 00 00 00 00 00 00 00 -- 056C20
00 00 00 00 00 00 00 00 00 00 00 00 00 00 00 00 -- 056C30
00 00 00 00 00 00 00 00 00 00 00 00 00 00 00 00 -- 056C40
00 00 00 00 00 00 00 00 00 00 00 00 00 00 00 00 -- 056C50

00 00 00 00 00 00 00 00 00 00 00 00 00 00 00 00 -- 056C60
00 00 00 00 00 00 00 00 00 00 00 00 00 00 00 00 -- 056C70
00 00 00 00 00 00 00 00 00 00 00 00 00 00 00 00 -- 056C80
00 00 00 00 00 00 00 00 00 00 00 00 00 00 00 00 -- 056C90
00 00 00 00 00 00 00 00 00 00 00 00 00 00 00 00 -- 056CA0
00 00 00 00 00 00 00 00 00 00 00 00 00 00 00 00 -- 056CB0
00 00 00 00 00 00 00 00 00 00 00 00 00 00 00 00 -- 056CC0
00 00 00 00 00 00 00 00 00 00 00 00 00 00 00 00 -- 056CD0
00 00 00 00 00 00 00 00 00 00 00 00 00 00 00 00 -- 056CE0
00 00 00 00 00 00 00 00 00 00 00 00 00 00 00 00 -- 056CF0
00 00 00 00 00 00 00 00 00 00 00 00 00 00 00 00 -- 056D00
00 00 00 00 00 00 00 00 00 00 00 00 00 00 00 00 -- 056D10
00 00 00 00 00 00 00 00 00 00 00 00 00 00 00 00 -- 056D20
00 00 00 00 00 00 00 00 00 00 00 00 00 00 00 00 -- 056D30
00 00 00 00 00 00 00 00 00 00 00 00 00 00 00 00 -- 056D40
00 00 00 00 00 00 00 00 00 00 00 00 00 00 00 00 -- 056D50
00 00 00 00 00 00 00 00 00 00 00 00 00 00 00 00 -- 056D60
00 00 00 00 00 00 00 00 00 00 00 00 00 00 00 00 -- 056D70
00 00 00 00 00 00 00 00 00 00 00 00 00 00 00 00 -- 056D80
00 00 00 00 00 00 00 00 00 00 00 00 00 00 00 00 -- 056D90
00 00 00 00 00 00 00 00 00 00 00 00 00 00 00 00 -- 056DA0
00 00 00 00 00 00 00 00 00 00 00 00 00 00 00 00 -- 056DB0
00 00 00 00 00 00 00 00 00 00 00 00 00 00 00 00 -- 056DC0
```

```
00 00 00 00 00 00 00 00 00 00 00 00 00 00 00 00 -- 056DD0
00 00 00 00 00 00 00 00 00 00 00 00 00 00 00 00 -- 056DE0
00 00 00 00 00 00 00 00 00 00 00 00 00 00 00 00 -- 056DF0
00 00 00 00 00 00 00 00 00 00 00 00 00 00 01 FE -- 056E00
00 00 00 00 00 00 00 00 00 00 00 00 00 00 00 00 -- 056E10
00 00 00 00 00 00 00 00 00 00 00 00 00 00 00 00 -- 056E20
00 00 00 00 00 00 00 00 00 00 00 00 00 00 00 00 -- 056E30
00 00 00 00 00 00 00 00 00 00 00 00 00 00 00 00 -- 056E40
00 00 00 00 00 00 00 00 00 00 00 00 00 00 00 00 -- 056E50
00 00 00 00 00 00 00 00 00 00 00 00 00 00 00 00 -- 056E60
00 00 00 00 00 00 00 00 00 00 00 00 00 00 00 00 -- 056E70
00 00 00 00 00 00 00 00 00 00 00 00 00 00 00 00 -- 056E80
00 00 00 00 00 00 00 00 00 00 00 00 00 00 00 00 -- 056E90
00 00 00 00 00 00 00 00 00 00 00 00 00 00 00 00 -- 056EA0
00 00 00 00 00 00 00 00 00 00 00 00 00 00 00 00 -- 056EB0
00 00 00 00 00 00 00 00 00 00 00 00 00 00 00 00 -- 056EC0
00 00 00 00 00 00 00 00 00 00 00 00 00 00 00 00 -- 056ED0
00 00 00 00 00 00 00 00 00 00 00 00 00 00 00 00 -- 056EE0
00 00 00 00 00 00 00 00 00 00 00 00 00 00 00 00 -- 056EF0
00 00 00 00 00 00 00 00 00 00 00 00 00 00 00 00 -- 056F00
00 00 00 00 00 00 00 00 00 00 00 00 00 00 00 00 -- 056F10
00 00 00 00 00 00 00 00 00 00 00 00 00 00 00 00 -- 056F20
00 00 00 00 00 00 00 00 00 00 00 00 00 00 00 00 -- 056F30
00 00 00 00 00 00 00 00 00 00 00 00 00 00 00 00 -- 056F40
00 00 00 00 00 00 00 00 00 00 00 00 00 00 00 00 -- 056F50
00 00 00 00 00 00 00 00 00 00 00 00 00 00 00 00 -- 056F60
00 00 00 00 00 00 00 00 00 00 00 00 00 00 00 00 -- 056F70
00 00 00 00 00 00 00 00 00 00 00 00 00 00 00 00 -- 056F80
00 00 00 00 00 00 00 00 00 00 00 00 00 00 00 00 -- 056F90
00 00 00 00 00 00 00 00 00 00 00 00 00 00 00 00 -- 056FA0
00 00 00 00 00 00 00 00 00 00 00 00 00 00 00 00 -- 056FB0
00 00 00 00 00 00 00 00 00 00 00 00 00 00 00 00 -- 056FC0
00 00 00 00 00 00 00 00 00 00 00 00 00 00 00 00 -- 056FD0
00 00 00 00 00 00 00 00 00 00 00 00 00 00 00 00 -- 056FE0
00 00 00 00 00 00 00 00 00 00 00 00 00 00 00 00 -- 056FF0

00 00 00 00 00 00 00 00 00 00 00 00 00 00 01 FE -- 057000
00 00 00 00 00 00 00 00 00 00 00 00 00 00 00 00 -- 057010
00 00 00 00 00 00 00 00 00 00 00 00 00 00 00 00 -- 057020
00 00 00 00 00 00 00 00 00 00 00 00 00 00 00 00 -- 057030
00 00 00 00 00 00 00 00 00 00 00 00 00 00 00 00 -- 057040
00 00 00 00 00 00 00 00 00 00 00 00 00 00 00 00 -- 057050
00 00 00 00 00 00 00 00 00 00 00 00 00 00 00 00 -- 057060
00 00 00 00 00 00 00 00 00 00 00 00 00 00 00 00 -- 057070
00 00 00 00 00 00 00 00 00 00 00 00 00 00 00 00 -- 057080
00 00 00 00 00 00 00 00 00 00 00 00 00 00 00 00 -- 057090
00 00 00 00 00 00 00 00 00 00 00 00 00 00 00 00 -- 0570A0
00 00 00 00 00 00 00 00 00 00 00 00 00 00 00 00 -- 0570B0
00 00 00 00 00 00 00 00 00 00 00 00 00 00 00 00 -- 0570C0
00 00 00 00 00 00 00 00 00 00 00 00 00 00 00 00 -- 0570D0
00 00 00 00 00 00 00 00 00 00 00 00 00 00 00 00 -- 0570E0
00 00 00 00 00 00 00 00 00 00 00 00 00 00 00 00 -- 0570F0
00 00 00 00 00 00 00 00 00 00 00 00 00 00 00 00 -- 057100
00 00 00 00 00 00 00 00 00 00 00 00 00 00 00 00 -- 057110
00 00 00 00 00 00 00 00 00 00 00 00 00 00 00 00 -- 057120
00 00 00 00 00 00 00 00 00 00 00 00 00 00 00 00 -- 057130
00 00 00 00 00 00 00 00 00 00 00 00 00 00 00 00 -- 057140
00 00 00 00 00 00 00 00 00 00 00 00 00 00 00 00 -- 057150
00 00 00 00 00 00 00 00 00 00 00 00 00 00 00 00 -- 057160
00 00 00 00 00 00 00 00 00 00 00 00 00 00 00 00 -- 057170
```

```
00 00 00 00 00 00 00 00 00 00 00 00 00 00 00 00 -- 057180
00 00 00 00 00 00 00 00 00 00 00 00 00 00 00 00 -- 057190
00 00 00 00 00 00 00 00 00 00 00 00 00 00 00 00 -- 0571A0
00 00 00 00 00 00 00 00 00 00 00 00 00 00 00 00 -- 0571B0
00 00 00 00 00 00 00 00 00 00 00 00 00 00 00 00 -- 0571C0
00 00 00 00 00 00 00 00 00 00 00 00 00 00 00 00 -- 0571D0
00 00 00 00 00 00 00 00 00 00 00 00 00 00 00 00 -- 0571E0
00 00 00 00 00 00 00 00 00 00 00 00 00 00 00 00 -- 0571F0
00 00 00 00 00 00 00 00 00 00 00 00 00 00 01 FE -- 057200
00 00 00 00 00 00 00 00 00 00 00 00 00 00 00 00 -- 057210
00 00 00 00 00 00 00 00 00 00 00 00 00 00 00 00 -- 057220
00 00 00 00 00 00 00 00 00 00 00 00 00 00 00 00 -- 057230
00 00 00 00 00 00 00 00 00 00 00 00 00 00 00 00 -- 057240
00 00 00 00 00 00 00 00 00 00 00 00 00 00 00 00 -- 057250
00 00 00 00 00 00 00 00 00 00 00 00 00 00 00 00 -- 057260
00 00 00 00 00 00 00 00 00 00 00 00 00 00 00 00 -- 057270
00 00 00 00 00 00 00 00 00 00 00 00 00 00 00 00 -- 057280
00 00 00 00 00 00 00 00 00 00 00 00 00 00 00 00 -- 057290
00 00 00 00 00 00 00 00 00 00 00 00 00 00 00 00 -- 0572A0
00 00 00 00 00 00 00 00 00 00 00 00 00 00 00 00 -- 0572B0
00 00 00 00 00 00 00 00 00 00 00 00 00 00 00 00 -- 0572C0
00 00 00 00 00 00 00 00 00 00 00 00 00 00 00 00 -- 0572D0
00 00 00 00 00 00 00 00 00 00 00 00 00 00 00 00 -- 0572E0
00 00 00 00 00 00 00 00 00 00 00 00 00 00 00 00 -- 0572F0
00 00 00 00 00 00 00 00 00 00 00 00 00 00 00 00 -- 057300
00 00 00 00 00 00 00 00 00 00 00 00 00 00 00 00 -- 057310
00 00 00 00 00 00 00 00 00 00 00 00 00 00 00 00 -- 057320
00 00 00 00 00 00 00 00 00 00 00 00 00 00 00 00 -- 057330
00 00 00 00 00 00 00 00 00 00 00 00 00 00 00 00 -- 057340
00 00 00 00 00 00 00 00 00 00 00 00 00 00 00 00 -- 057350
00 00 00 00 00 00 00 00 00 00 00 00 00 00 00 00 -- 057360
00 00 00 00 00 00 00 00 00 00 00 00 00 00 00 00 -- 057370
00 00 00 00 00 00 00 00 00 00 00 00 00 00 00 00 -- 057380
00 00 00 00 00 00 00 00 00 00 00 00 00 00 00 00 -- 057390

00 00 00 00 00 00 00 00 00 00 00 00 00 00 00 00 -- 0573A0
00 00 00 00 00 00 00 00 00 00 00 00 00 00 00 00 -- 0573B0
00 00 00 00 00 00 00 00 00 00 00 00 00 00 00 00 -- 0573C0
00 00 00 00 00 00 00 00 00 00 00 00 00 00 00 00 -- 0573D0
00 00 00 00 00 00 00 00 00 00 00 00 00 00 00 00 -- 0573E0
00 00 00 00 00 00 00 00 00 00 00 00 00 00 00 00 -- 0573F0
00 00 00 00 00 00 00 00 00 00 00 00 00 00 01 FE -- 057400
00 00 00 00 00 00 00 00 00 00 00 00 00 00 00 00 -- 057410
00 00 00 00 00 00 00 00 00 00 00 00 00 00 00 00 -- 057420
00 00 00 00 00 00 00 00 00 00 00 00 00 00 00 00 -- 057430
00 00 00 00 00 00 00 00 00 00 00 00 00 00 00 00 -- 057440
00 00 00 00 00 00 00 00 00 00 00 00 00 00 00 00 -- 057450
00 00 00 00 00 00 00 00 00 00 00 00 00 00 00 00 -- 057460
00 00 00 00 00 00 00 00 00 00 00 00 00 00 00 00 -- 057470
00 00 00 00 00 00 00 00 00 00 00 00 00 00 00 00 -- 057480
00 00 00 00 00 00 00 00 00 00 00 00 00 00 00 00 -- 057490
00 00 00 00 00 00 00 00 00 00 00 00 00 00 00 00 -- 0574A0
00 00 00 00 00 00 00 00 00 00 00 00 00 00 00 00 -- 0574B0
00 00 00 00 00 00 00 00 00 00 00 00 00 00 00 00 -- 0574C0
00 00 00 00 00 00 00 00 00 00 00 00 00 00 00 00 -- 0574D0
00 00 00 00 00 00 00 00 00 00 00 00 00 00 00 00 -- 0574E0
00 00 00 00 00 00 00 00 00 00 00 00 00 00 00 00 -- 0574F0
00 00 00 00 00 00 00 00 00 00 00 00 00 00 00 00 -- 057500
00 00 00 00 00 00 00 00 00 00 00 00 00 00 00 00 -- 057510
00 00 00 00 00 00 00 00 00 00 00 00 00 00 00 00 -- 057520
```

```
00  00  00  00  00  00  00  00  00  00  00  00  00  00  00  00  --  057530
00  00  00  00  00  00  00  00  00  00  00  00  00  00  00  00  --  057540
00  00  00  00  00  00  00  00  00  00  00  00  00  00  00  00  --  057550
00  00  00  00  00  00  00  00  00  00  00  00  00  00  00  00  --  057560
00  00  00  00  00  00  00  00  00  00  00  00  00  00  00  00  --  057570
00  00  00  00  00  00  00  00  00  00  00  00  00  00  00  00  --  057580
00  00  00  00  00  00  00  00  00  00  00  00  00  00  00  00  --  057590
00  00  00  00  00  00  00  00  00  00  00  00  00  00  00  00  --  0575A0
00  00  00  00  00  00  00  00  00  00  00  00  00  00  00  00  --  0575B0
00  00  00  00  00  00  00  00  00  00  00  00  00  00  00  00  --  0575C0
00  00  00  00  00  00  00  00  00  00  00  00  00  00  00  00  --  0575D0
00  00  00  00  00  00  00  00  00  00  00  00  00  00  00  00  --  0575E0
00  00  00  00  00  00  00  00  00  00  00  00  00  00  00  00  --  0575F0
00  00  00  00  00  00  00  00  00  00  00  00  00  00  01  FE  --  057600
00  00  00  00  00  00  00  00  00  00  00  00  00  00  00  00  --  057610
00  00  00  00  00  00  00  00  00  00  00  00  00  00  00  00  --  057620
00  00  00  00  00  00  00  00  00  00  00  00  00  00  00  00  --  057630
00  00  00  00  00  00  00  00  00  00  00  00  00  00  00  00  --  057640
00  00  00  00  00  00  00  00  00  00  00  00  00  00  00  00  --  057650
00  00  00  00  00  00  00  00  00  00  00  00  00  00  00  00  --  057660
00  00  00  00  00  00  00  00  00  00  00  00  00  00  00  00  --  057670
00  00  00  00  00  00  00  00  00  00  00  00  00  00  00  00  --  057680
00  00  00  00  00  00  00  00  00  00  00  00  00  00  00  00  --  057690
00  00  00  00  00  00  00  00  00  00  00  00  00  00  00  00  --  0576A0
00  00  00  00  00  00  00  00  00  00  00  00  00  00  00  00  --  0576B0
00  00  00  00  00  00  00  00  00  00  00  00  00  00  00  00  --  0576C0
00  00  00  00  00  00  00  00  00  00  00  00  00  00  00  00  --  0576D0
00  00  00  00  00  00  00  00  00  00  00  00  00  00  00  00  --  0576E0
00  00  00  00  00  00  00  00  00  00  00  00  00  00  00  00  --  0576F0
00  00  00  00  00  00  00  00  00  00  00  00  00  00  00  00  --  057700
00  00  00  00  00  00  00  00  00  00  00  00  00  00  00  00  --  057710
00  00  00  00  00  00  00  00  00  00  00  00  00  00  00  00  --  057720
00  00  00  00  00  00  00  00  00  00  00  00  00  00  00  00  --  057730

00  00  00  00  00  00  00  00  00  00  00  00  00  00  00  00  --  057740
00  00  00  00  00  00  00  00  00  00  00  00  00  00  00  00  --  057750
00  00  00  00  00  00  00  00  00  00  00  00  00  00  00  00  --  057760
00  00  00  00  00  00  00  00  00  00  00  00  00  00  00  00  --  057770
00  00  00  00  00  00  00  00  00  00  00  00  00  00  00  00  --  057780
00  00  00  00  00  00  00  00  00  00  00  00  00  00  00  00  --  057790
00  00  00  00  00  00  00  00  00  00  00  00  00  00  00  00  --  0577A0
00  00  00  00  00  00  00  00  00  00  00  00  00  00  00  00  --  0577B0
00  00  00  00  00  00  00  00  00  00  00  00  00  00  00  00  --  0577C0
00  00  00  00  00  00  00  00  00  00  00  00  00  00  00  00  --  0577D0
00  00  00  00  00  00  00  00  00  00  00  00  00  00  00  00  --  0577E0
00  00  00  00  00  00  00  00  00  00  00  00  00  00  00  00  --  0577F0
00  00  00  00  00  00  00  00  00  00  00  00  00  00  01  FE  --  057800
00  00  00  00  00  00  00  00  00  00  00  00  00  00  00  00  --  057810
00  00  00  00  00  00  00  00  00  00  00  00  00  00  00  00  --  057820
00  00  00  00  00  00  00  00  00  00  00  00  00  00  00  00  --  057830
00  00  00  00  00  00  00  00  00  00  00  00  00  00  00  00  --  057840
00  00  00  00  00  00  00  00  00  00  00  00  00  00  00  00  --  057850
00  00  00  00  00  00  00  00  00  00  00  00  00  00  00  00  --  057860
00  00  00  00  00  00  00  00  00  00  00  00  00  00  00  00  --  057870
00  00  00  00  00  00  00  00  00  00  00  00  00  00  00  00  --  057880
00  00  00  00  00  00  00  00  00  00  00  00  00  00  00  00  --  057890
00  00  00  00  00  00  00  00  00  00  00  00  00  00  00  00  --  0578A0
00  00  00  00  00  00  00  00  00  00  00  00  00  00  00  00  --  0578B0
00  00  00  00  00  00  00  00  00  00  00  00  00  00  00  00  --  0578C0
00  00  00  00  00  00  00  00  00  00  00  00  00  00  00  00  --  0578D0
```

```
00 00 00 00 00 00 00 00 00 00 00 00 00 00 00 00 -- 0578E0
00 00 00 00 00 00 00 00 00 00 00 00 00 00 00 00 -- 0578F0
00 00 00 00 00 00 00 00 00 00 00 00 00 00 00 00 -- 057900
00 00 00 00 00 00 00 00 00 00 00 00 00 00 00 00 -- 057910
00 00 00 00 00 00 00 00 00 00 00 00 00 00 00 00 -- 057920
00 00 00 00 00 00 00 00 00 00 00 00 00 00 00 00 -- 057930
00 00 00 00 00 00 00 00 00 00 00 00 00 00 00 00 -- 057940
00 00 00 00 00 00 00 00 00 00 00 00 00 00 00 00 -- 057950
00 00 00 00 00 00 00 00 00 00 00 00 00 00 00 00 -- 057960
00 00 00 00 00 00 00 00 00 00 00 00 00 00 00 00 -- 057970
00 00 00 00 00 00 00 00 00 00 00 00 00 00 00 00 -- 057980
00 00 00 00 00 00 00 00 00 00 00 00 00 00 00 00 -- 057990
00 00 00 00 00 00 00 00 00 00 00 00 00 00 00 00 -- 0579A0
00 00 00 00 00 00 00 00 00 00 00 00 00 00 00 00 -- 0579B0
00 00 00 00 00 00 00 00 00 00 00 00 00 00 00 00 -- 0579C0
00 00 00 00 00 00 00 00 00 00 00 00 00 00 00 00 -- 0579D0
00 00 00 00 00 00 00 00 00 00 00 00 00 00 00 00 -- 0579E0
00 00 00 00 00 00 00 00 00 00 00 00 00 00 00 00 -- 0579F0
00 00 00 00 00 00 00 00 00 00 00 00 00 00 01 FE -- 057A00
00 00 00 00 00 00 00 00 00 00 00 00 00 00 00 00 -- 057A10
00 00 00 00 00 00 00 00 00 00 00 00 00 00 00 00 -- 057A20
00 00 00 00 00 00 00 00 00 00 00 00 00 00 00 00 -- 057A30
00 00 00 00 00 00 00 00 00 00 00 00 00 00 00 00 -- 057A40
00 00 00 00 00 00 00 00 00 00 00 00 00 00 00 00 -- 057A50
00 00 00 00 00 00 00 00 00 00 00 00 00 00 00 00 -- 057A60
00 00 00 00 00 00 00 00 00 00 00 00 00 00 00 00 -- 057A70
00 00 00 00 00 00 00 00 00 00 00 00 00 00 00 00 -- 057A80
00 00 00 00 00 00 00 00 00 00 00 00 00 00 00 00 -- 057A90
00 00 00 00 00 00 00 00 00 00 00 00 00 00 00 00 -- 057AA0
00 00 00 00 00 00 00 00 00 00 00 00 00 00 00 00 -- 057AB0
00 00 00 00 00 00 00 00 00 00 00 00 00 00 00 00 -- 057AC0
00 00 00 00 00 00 00 00 00 00 00 00 00 00 00 00 -- 057AD0

00 00 00 00 00 00 00 00 00 00 00 00 00 00 00 00 -- 057AE0
00 00 00 00 00 00 00 00 00 00 00 00 00 00 00 00 -- 057AF0
00 00 00 00 00 00 00 00 00 00 00 00 00 00 00 00 -- 057B00
00 00 00 00 00 00 00 00 00 00 00 00 00 00 00 00 -- 057B10
00 00 00 00 00 00 00 00 00 00 00 00 00 00 00 00 -- 057B20
00 00 00 00 00 00 00 00 00 00 00 00 00 00 00 00 -- 057B30
00 00 00 00 00 00 00 00 00 00 00 00 00 00 00 00 -- 057B40
00 00 00 00 00 00 00 00 00 00 00 00 00 00 00 00 -- 057B50
00 00 00 00 00 00 00 00 00 00 00 00 00 00 00 00 -- 057B60
00 00 00 00 00 00 00 00 00 00 00 00 00 00 00 00 -- 057B70
00 00 00 00 00 00 00 00 00 00 00 00 00 00 00 00 -- 057B80
00 00 00 00 00 00 00 00 00 00 00 00 00 00 00 00 -- 057B90
00 00 00 00 00 00 00 00 00 00 00 00 00 00 00 00 -- 057BA0
00 00 00 00 00 00 00 00 00 00 00 00 00 00 00 00 -- 057BB0
00 00 00 00 00 00 00 00 00 00 00 00 00 00 00 00 -- 057BC0
00 00 00 00 00 00 00 00 00 00 00 00 00 00 00 00 -- 057BD0
00 00 00 00 00 00 00 00 00 00 00 00 00 00 00 00 -- 057BE0
00 00 00 00 00 00 00 00 00 00 00 00 00 00 00 00 -- 057BF0
00 00 00 00 00 00 00 00 00 00 00 00 00 00 01 FE -- 057C00
00 00 00 00 00 00 00 00 00 00 00 00 00 00 00 00 -- 057C10
00 00 00 00 00 00 00 00 00 00 00 00 00 00 00 00 -- 057C20
00 00 00 00 00 00 00 00 00 00 00 00 00 00 00 00 -- 057C30
00 00 00 00 00 00 00 00 00 00 00 00 00 00 00 00 -- 057C40
00 00 00 00 00 00 00 00 00 00 00 00 00 00 00 00 -- 057C50
00 00 00 00 00 00 00 00 00 00 00 00 00 00 00 00 -- 057C60
00 00 00 00 00 00 00 00 00 00 00 00 00 00 00 00 -- 057C70
00 00 00 00 00 00 00 00 00 00 00 00 00 00 00 00 -- 057C80
```

```
00 00 00 00 00 00 00 00 00 00 00 00 00 00 00 00 -- 057C90
00 00 00 00 00 00 00 00 00 00 00 00 00 00 00 00 -- 057CA0
00 00 00 00 00 00 00 00 00 00 00 00 00 00 00 00 -- 057CB0
00 00 00 00 00 00 00 00 00 00 00 00 00 00 00 00 -- 057CC0
00 00 00 00 00 00 00 00 00 00 00 00 00 00 00 00 -- 057CD0
00 00 00 00 00 00 00 00 00 00 00 00 00 00 00 00 -- 057CE0
00 00 00 00 00 00 00 00 00 00 00 00 00 00 00 00 -- 057CF0
00 00 00 00 00 00 00 00 00 00 00 00 00 00 00 00 -- 057D00
00 00 00 00 00 00 00 00 00 00 00 00 00 00 00 00 -- 057D10
00 00 00 00 00 00 00 00 00 00 00 00 00 00 00 00 -- 057D20
00 00 00 00 00 00 00 00 00 00 00 00 00 00 00 00 -- 057D30
00 00 00 00 00 00 00 00 00 00 00 00 00 00 00 00 -- 057D40
00 00 00 00 00 00 00 00 00 00 00 00 00 00 00 00 -- 057D50
00 00 00 00 00 00 00 00 00 00 00 00 00 00 00 00 -- 057D60
00 00 00 00 00 00 00 00 00 00 00 00 00 00 00 00 -- 057D70
00 00 00 00 00 00 00 00 00 00 00 00 00 00 00 00 -- 057D80
00 00 00 00 00 00 00 00 00 00 00 00 00 00 00 00 -- 057D90
00 00 00 00 00 00 00 00 00 00 00 00 00 00 00 00 -- 057DA0
00 00 00 00 00 00 00 00 00 00 00 00 00 00 00 00 -- 057DB0
00 00 00 00 00 00 00 00 00 00 00 00 00 00 00 00 -- 057DC0
00 00 00 00 00 00 00 00 00 00 00 00 00 00 00 00 -- 057DD0
00 00 00 00 00 00 00 00 00 00 00 00 00 00 00 00 -- 057DE0
00 00 00 00 00 00 00 00 00 00 00 00 00 00 00 00 -- 057DF0
00 00 00 00 00 00 00 00 00 00 00 00 00 00 01 FE -- 057E00
00 00 00 00 00 00 00 00 00 00 00 00 00 00 00 00 -- 057E10
00 00 00 00 00 00 00 00 00 00 00 00 00 00 00 00 -- 057E20
00 00 00 00 00 00 00 00 00 00 00 00 00 00 00 00 -- 057E30
00 00 00 00 00 00 00 00 00 00 00 00 00 00 00 00 -- 057E40
00 00 00 00 00 00 00 00 00 00 00 00 00 00 00 00 -- 057E50
00 00 00 00 00 00 00 00 00 00 00 00 00 00 00 00 -- 057E60
00 00 00 00 00 00 00 00 00 00 00 00 00 00 00 00 -- 057E70

00 00 00 00 00 00 00 00 00 00 00 00 00 00 00 00 -- 057E80
00 00 00 00 00 00 00 00 00 00 00 00 00 00 00 00 -- 057E90
00 00 00 00 00 00 00 00 00 00 00 00 00 00 00 00 -- 057EA0
00 00 00 00 00 00 00 00 00 00 00 00 00 00 00 00 -- 057EB0
00 00 00 00 00 00 00 00 00 00 00 00 00 00 00 00 -- 057EC0
00 00 00 00 00 00 00 00 00 00 00 00 00 00 00 00 -- 057ED0
00 00 00 00 00 00 00 00 00 00 00 00 00 00 00 00 -- 057EE0
00 00 00 00 00 00 00 00 00 00 00 00 00 00 00 00 -- 057EF0
00 00 00 00 00 00 00 00 00 00 00 00 00 00 00 00 -- 057F00
00 00 00 00 00 00 00 00 00 00 00 00 00 00 00 00 -- 057F10
00 00 00 00 00 00 00 00 00 00 00 00 00 00 00 00 -- 057F20
00 00 00 00 00 00 00 00 00 00 00 00 00 00 00 00 -- 057F30
00 00 00 00 00 00 00 00 00 00 00 00 00 00 00 00 -- 057F40
00 00 00 00 00 00 00 00 00 00 00 00 00 00 00 00 -- 057F50
00 00 00 00 00 00 00 00 00 00 00 00 00 00 00 00 -- 057F60
00 00 00 00 00 00 00 00 00 00 00 00 00 00 00 00 -- 057F70
00 00 00 00 00 00 00 00 00 00 00 00 00 00 00 00 -- 057F80
00 00 00 00 00 00 00 00 00 00 00 00 00 00 00 00 -- 057F90
00 00 00 00 00 00 00 00 00 00 00 00 00 00 00 00 -- 057FA0
00 00 00 00 00 00 00 00 00 00 00 00 00 00 00 00 -- 057FB0
00 00 00 00 00 00 00 00 00 00 00 00 00 00 00 00 -- 057FC0
00 00 00 00 00 00 00 00 00 00 00 00 00 00 00 00 -- 057FD0
00 00 00 00 00 00 00 00 00 00 00 00 00 00 00 00 -- 057FE0
00 0D 00 0E 00 08 00 04 00 02 00 01 00 00 00 00 -- 057FF0
00 00 00 00 00 00 00 00 00 0F 00 07 00 0B 01 FE -- 058000
00 00 00 00 00 00 00 00 00 00 00 00 00 00 00 00 -- 058010
00 00 00 00 00 00 00 00 00 00 00 00 00 00 00 00 -- 058020
00 00 00 00 00 00 00 00 00 00 00 00 00 00 00 00 -- 058030
```

```
00  00  00  00  00  00  00  00  00  00  00  00  00  00  00  00  --  058040
00  00  00  00  00  00  00  00  00  00  00  00  00  00  00  00  --  058050
00  00  00  00  00  00  00  00  00  00  00  00  00  00  00  00  --  058060
00  00  00  00  00  00  00  00  00  00  00  00  00  00  00  00  --  058070
00  00  00  00  00  00  00  00  00  00  00  00  00  00  00  00  --  058080
00  00  00  00  00  00  00  00  00  00  00  00  00  00  00  00  --  058090
00  00  00  00  00  00  00  00  00  00  00  00  00  00  00  00  --  0580A0
00  00  00  00  00  00  00  00  00  00  00  00  00  00  00  00  --  0580B0
00  00  00  00  00  00  00  00  00  00  00  00  00  00  00  00  --  0580C0
00  00  00  00  00  00  00  00  00  00  00  00  00  00  00  00  --  0580D0
00  00  00  00  00  00  00  00  00  00  00  00  00  00  00  00  --  0580E0
00  00  00  00  00  00  00  00  00  00  00  00  00  00  00  00  --  0580F0
00  00  00  00  00  00  00  00  00  00  00  00  00  00  00  00  --  058100
00  00  00  00  00  00  00  00  00  00  00  00  00  00  00  00  --  058110
00  00  00  00  00  00  00  00  00  00  00  00  00  00  00  00  --  058120
00  00  00  00  00  00  00  00  00  00  00  00  00  00  00  00  --  058130
00  00  00  00  00  00  00  00  00  00  00  00  00  00  00  00  --  058140
00  00  00  00  00  00  00  00  00  00  00  00  00  00  00  00  --  058150
00  00  00  00  00  00  00  00  00  00  00  00  00  00  00  00  --  058160
00  00  00  00  00  00  00  00  00  00  00  00  00  00  00  00  --  058170
00  00  00  00  00  00  00  00  00  00  00  00  00  00  00  00  --  058180
00  00  00  00  00  00  00  00  00  00  00  00  00  00  00  00  --  058190
00  00  00  00  00  00  00  00  00  00  00  00  00  00  00  00  --  0581A0
00  00  00  00  00  00  00  00  00  00  00  00  00  00  00  00  --  0581B0
00  00  00  00  00  00  00  00  00  00  00  00  00  00  00  00  --  0581C0
00  00  00  00  00  00  00  00  00  00  00  00  00  00  00  00  --  0581D0
00  00  00  00  00  00  00  00  00  00  00  00  00  00  00  00  --  0581E0
00  00  00  00  00  00  00  00  00  00  00  00  00  00  00  00  --  0581F0
00  00  00  00  00  00  00  00  00  00  00  00  00  00  01  FE  --  058200
00  00  00  00  00  00  00  00  00  00  00  00  00  00  00  00  --  058210

00  00  00  00  00  00  00  00  00  00  00  00  00  00  00  00  --  058220
00  00  00  00  00  00  00  00  00  00  00  00  00  00  00  00  --  058230
00  00  00  00  00  00  00  00  00  00  00  00  00  00  00  00  --  058240
00  00  00  00  00  00  00  00  00  00  00  00  00  00  00  00  --  058250
00  00  00  00  00  00  00  00  00  00  00  00  00  00  00  00  --  058260
00  00  00  00  00  00  00  00  00  00  00  00  00  00  00  00  --  058270
00  00  00  00  00  00  00  00  00  00  00  00  00  00  00  00  --  058280
00  00  00  00  00  00  00  00  00  00  00  00  00  00  00  00  --  058290
00  00  00  00  00  00  00  00  00  00  00  00  00  00  00  00  --  0582A0
00  00  00  00  00  00  00  00  00  00  00  00  00  00  00  00  --  0582B0
00  00  00  00  00  00  00  00  00  00  00  00  00  00  00  00  --  0582C0
00  00  00  00  00  00  00  00  00  00  00  00  00  00  00  00  --  0582D0
00  00  00  00  00  00  00  00  00  00  00  00  00  00  00  00  --  0582E0
00  00  00  00  00  00  00  00  00  00  00  00  00  00  00  00  --  0582F0
00  00  00  00  00  00  00  00  00  00  00  00  00  00  00  00  --  058300
00  00  00  00  00  00  00  00  00  00  00  00  00  00  00  00  --  058310
00  00  00  00  00  00  00  00  00  00  00  00  00  00  00  00  --  058320
00  00  00  00  00  00  00  00  00  00  00  00  00  00  00  00  --  058330
00  00  00  00  00  00  00  00  00  00  00  00  00  00  00  00  --  058340
00  00  00  00  00  00  00  00  00  00  00  00  00  00  00  00  --  058350
00  00  00  00  00  00  00  00  00  00  00  00  00  00  00  00  --  058360
00  00  00  00  00  00  00  00  00  00  00  00  00  00  00  00  --  058370
00  00  00  00  00  00  00  00  00  00  00  00  00  00  00  00  --  058380
00  00  00  00  00  00  00  00  00  00  00  00  00  00  00  00  --  058390
00  00  00  00  00  00  00  00  00  00  00  00  00  00  00  00  --  0583A0
00  00  00  00  00  00  00  00  00  00  00  00  00  00  00  00  --  0583B0
00  00  00  00  00  00  00  00  00  00  00  00  00  00  00  00  --  0583C0
00  00  00  00  00  00  00  00  00  00  00  00  00  00  00  00  --  0583D0
00  00  00  00  00  00  00  00  00  00  00  00  00  00  00  00  --  0583E0
```

```
00 00 00 00 00 00 00 00 00 00 00 00 00 00 00 00 -- 0583F0
00 00 00 00 00 00 00 00 00 00 00 00 00 00 00 01 FE -- 058400
00 00 00 00 00 00 00 00 00 00 00 00 00 00 00 00 00 -- 058410
00 00 00 00 00 00 00 00 00 00 00 00 00 00 00 00 00 -- 058420
00 00 00 00 00 00 00 00 00 00 00 00 00 00 00 00 00 -- 058430
00 00 00 00 00 00 00 00 00 00 00 00 00 00 00 00 00 -- 058440
00 00 00 00 00 00 00 00 00 00 00 00 00 00 00 00 00 -- 058450
00 00 00 00 00 00 00 00 00 00 00 00 00 00 00 00 00 -- 058460
00 00 00 00 00 00 00 00 00 00 00 00 00 00 00 00 00 -- 058470
00 00 00 00 00 00 00 00 00 00 00 00 00 00 00 00 00 -- 058480
00 00 00 00 00 00 00 00 00 00 00 00 00 00 00 00 00 -- 058490
00 00 00 00 00 00 00 00 00 00 00 00 00 00 00 00 00 -- 0584A0
00 00 00 00 00 00 00 00 00 00 00 00 00 00 00 00 00 -- 0584B0
00 00 00 00 00 00 00 00 00 00 00 00 00 00 00 00 00 -- 0584C0
00 00 00 00 00 00 00 00 00 00 00 00 00 00 00 00 00 -- 0584D0
00 00 00 00 00 00 00 00 00 00 00 00 00 00 00 00 00 -- 0584E0
00 00 00 00 00 00 00 00 00 00 00 00 00 00 00 00 00 -- 0584F0
00 00 00 00 00 00 00 00 00 00 00 00 00 00 00 00 00 -- 058500
00 00 00 00 00 00 00 00 00 00 00 00 00 00 00 00 00 -- 058510
00 00 00 00 00 00 00 00 00 00 00 00 00 00 00 00 00 -- 058520
00 00 00 00 00 00 00 00 00 00 00 00 00 00 00 00 00 -- 058530
00 00 00 00 00 00 00 00 00 00 00 00 00 00 00 00 00 -- 058540
00 00 00 00 00 00 00 00 00 00 00 00 00 00 00 00 00 -- 058550
00 00 00 00 00 00 00 00 00 00 00 00 00 00 00 00 00 -- 058560
00 00 00 00 00 00 00 00 00 00 00 00 00 00 00 00 00 -- 058570
00 00 00 00 00 00 00 00 00 00 00 00 00 00 00 00 00 -- 058580
00 00 00 00 00 00 00 00 00 00 00 00 00 00 00 00 00 -- 058590
00 00 00 00 00 00 00 00 00 00 00 00 00 00 00 00 00 -- 0585A0
00 00 00 00 00 00 00 00 00 00 00 00 00 00 00 00 00 -- 0585B0

00 00 00 00 00 00 00 00 00 00 00 00 00 00 00 00 -- 0585C0
00 00 00 00 00 00 00 00 00 00 00 00 00 00 00 00 -- 0585D0
00 00 00 00 00 00 00 00 00 00 00 00 00 00 00 00 -- 0585E0
00 00 00 00 00 00 00 00 00 00 00 00 00 00 00 00 -- 0585F0
00 00 00 00 00 00 00 00 00 00 00 00 00 00 01 FE -- 058600
00 00 00 00 00 00 00 00 00 00 00 00 00 00 00 00 -- 058610
00 00 00 00 00 00 00 00 00 00 00 00 00 00 00 00 -- 058620
00 00 00 00 00 00 00 00 00 00 00 00 00 00 00 00 -- 058630
00 00 00 00 00 00 00 00 00 00 00 00 00 00 00 00 -- 058640
00 00 00 00 00 00 00 00 00 00 00 00 00 00 00 00 -- 058650
00 00 00 00 00 00 00 00 00 00 00 00 00 00 00 00 -- 058660
00 00 00 00 00 00 00 00 00 00 00 00 00 00 00 00 -- 058670
00 00 00 00 00 00 00 00 00 00 00 00 00 00 00 00 -- 058680
00 00 00 00 00 00 00 00 00 00 00 00 00 00 00 00 -- 058690
00 00 00 00 00 00 00 00 00 00 00 00 00 00 00 00 -- 0586A0
00 00 00 00 00 00 00 00 00 00 00 00 00 00 00 00 -- 0586B0
00 00 00 00 00 00 00 00 00 00 00 00 00 00 00 00 -- 0586C0
00 00 00 00 00 00 00 00 00 00 00 00 00 00 00 00 -- 0586D0
00 00 00 00 00 00 00 00 00 00 00 00 00 00 00 00 -- 0586E0
00 00 00 00 00 00 00 00 00 00 00 00 00 00 00 00 -- 0586F0
00 00 00 00 00 00 00 00 00 00 00 00 00 00 00 00 -- 058700
00 00 00 00 00 00 00 00 00 00 00 00 00 00 00 00 -- 058710
00 00 00 00 00 00 00 00 00 00 00 00 00 00 00 00 -- 058720
00 00 00 00 00 00 00 00 00 00 00 00 00 00 00 00 -- 058730
00 00 00 00 00 00 00 00 00 00 00 00 00 00 00 00 -- 058740
00 00 00 00 00 00 00 00 00 00 00 00 00 00 00 00 -- 058750
00 00 00 00 00 00 00 00 00 00 00 00 00 00 00 00 -- 058760
00 00 00 00 00 00 00 00 00 00 00 00 00 00 00 00 -- 058770
00 00 00 00 00 00 00 00 00 00 00 00 00 00 00 00 -- 058780
00 00 00 00 00 00 00 00 00 00 00 00 00 00 00 00 -- 058790
```

```
00 00 00 00 00 00 00 00 00 00 00 00 00 00 00 00 -- 0587A0
00 00 00 00 00 00 00 00 00 00 00 00 00 00 00 00 -- 0587B0
00 00 00 00 00 00 00 00 00 00 00 00 00 00 00 00 -- 0587C0
00 00 00 00 00 00 00 00 00 00 00 00 00 00 00 00 -- 0587D0
00 00 00 00 00 00 00 00 00 00 00 00 00 00 00 00 -- 0587E0
00 00 00 00 00 00 00 00 00 00 00 00 00 00 00 00 -- 0587F0
00 00 00 00 00 00 00 00 00 00 00 00 00 00 01 FE -- 058800
00 00 00 00 00 00 00 00 00 00 00 00 00 00 00 00 -- 058810
00 00 00 00 00 00 00 00 00 00 00 00 00 00 00 00 -- 058820
00 00 00 00 00 00 00 00 00 00 00 00 00 00 00 00 -- 058830
00 00 00 00 00 00 00 00 00 00 00 00 00 00 00 00 -- 058840
00 00 00 00 00 00 00 00 00 00 00 00 00 00 00 00 -- 058850
00 00 00 00 00 00 00 00 00 00 00 00 00 00 00 00 -- 058860
00 00 00 00 00 00 00 00 00 00 00 00 00 00 00 00 -- 058870
00 00 00 00 00 00 00 00 00 00 00 00 00 00 00 00 -- 058880
00 00 00 00 00 00 00 00 00 00 00 00 00 00 00 00 -- 058890
00 00 00 00 00 00 00 00 00 00 00 00 00 00 00 00 -- 0588A0
00 00 00 00 00 00 00 00 00 00 00 00 00 00 00 00 -- 0588B0
00 00 00 00 00 00 00 00 00 00 00 00 00 00 00 00 -- 0588C0
00 00 00 00 00 00 00 00 00 00 00 00 00 00 00 00 -- 0588D0
00 00 00 00 00 00 00 00 00 00 00 00 00 00 00 00 -- 0588E0
00 00 00 00 00 00 00 00 00 00 00 00 00 00 00 00 -- 0588F0
00 00 00 00 00 00 00 00 00 00 00 00 00 00 00 00 -- 058900
00 00 00 00 00 00 00 00 00 00 00 00 00 00 00 00 -- 058910
00 00 00 00 00 00 00 00 00 00 00 00 00 00 00 00 -- 058920
00 00 00 00 00 00 00 00 00 00 00 00 00 00 00 00 -- 058930
00 00 00 00 00 00 00 00 00 00 00 00 00 00 00 00 -- 058940
00 00 00 00 00 00 00 00 00 00 00 00 00 00 00 00 -- 058950

00 00 00 00 00 00 00 00 00 00 00 00 00 00 00 00 -- 058960
00 00 00 00 00 00 00 00 00 00 00 00 00 00 00 00 -- 058970
00 00 00 00 00 00 00 00 00 00 00 00 00 00 00 00 -- 058980
00 00 00 00 00 00 00 00 00 00 00 00 00 00 00 00 -- 058990
00 00 00 00 00 00 00 00 00 00 00 00 00 00 00 00 -- 0589A0
00 00 00 00 00 00 00 00 00 00 00 00 00 00 00 00 -- 0589B0
00 00 00 00 00 00 00 00 00 00 00 00 00 00 00 00 -- 0589C0
00 00 00 00 00 00 00 00 00 00 00 00 00 00 00 00 -- 0589D0
00 00 00 00 00 00 00 00 00 00 00 00 00 00 00 00 -- 0589E0
00 00 00 00 00 00 00 00 00 00 00 00 00 00 00 00 -- 0589F0
00 00 00 00 00 00 00 00 00 00 00 00 00 00 01 FE -- 058A00
00 00 00 00 00 00 00 00 00 00 00 00 00 00 00 00 -- 058A10
00 00 00 00 00 00 00 00 00 00 00 00 00 00 00 00 -- 058A20
00 00 00 00 00 00 00 00 00 00 00 00 00 00 00 00 -- 058A30
00 00 00 00 00 00 00 00 00 00 00 00 00 00 00 00 -- 058A40
00 00 00 00 00 00 00 00 00 00 00 00 00 00 00 00 -- 058A50
00 00 00 00 00 00 00 00 00 00 00 00 00 00 00 00 -- 058A60
00 00 00 00 00 00 00 00 00 00 00 00 00 00 00 00 -- 058A70
00 00 00 00 00 00 00 00 00 00 00 00 00 00 00 00 -- 058A80
00 00 00 00 00 00 00 00 00 00 00 00 00 00 00 00 -- 058A90
00 00 00 00 00 00 00 00 00 00 00 00 00 00 00 00 -- 058AA0
00 00 00 00 00 00 00 00 00 00 00 00 00 00 00 00 -- 058AB0
00 00 00 00 00 00 00 00 00 00 00 00 00 00 00 00 -- 058AC0
00 00 00 00 00 00 00 00 00 00 00 00 00 00 00 00 -- 058AD0
00 00 00 00 00 00 00 00 00 00 00 00 00 00 00 00 -- 058AE0
00 00 00 00 00 00 00 00 00 00 00 00 00 00 00 00 -- 058AF0
00 00 00 00 00 00 00 00 00 00 00 00 00 00 00 00 -- 058B00
00 00 00 00 00 00 00 00 00 00 00 00 00 00 00 00 -- 058B10
00 00 00 00 00 00 00 00 00 00 00 00 00 00 00 00 -- 058B20
00 00 00 00 00 00 00 00 00 00 00 00 00 00 00 00 -- 058B30
00 00 00 00 00 00 00 00 00 00 00 00 00 00 00 00 -- 058B40
```

```
00 00 00 00 00 00 00 00 00 00 00 00 00 00 00 00 -- 058B50
00 00 00 00 00 00 00 00 00 00 00 00 00 00 00 00 -- 058B60
00 00 00 00 00 00 00 00 00 00 00 00 00 00 00 00 -- 058B70
00 00 00 00 00 00 00 00 00 00 00 00 00 00 00 00 -- 058B80
00 00 00 00 00 00 00 00 00 00 00 00 00 00 00 00 -- 058B90
00 00 00 00 00 00 00 00 00 00 00 00 00 00 00 00 -- 058BA0
00 00 00 00 00 00 00 00 00 00 00 00 00 00 00 00 -- 058BB0
00 00 00 00 00 00 00 00 00 00 00 00 00 00 00 00 -- 058BC0
00 00 00 00 00 00 00 00 00 00 00 00 00 00 00 00 -- 058BD0
00 00 00 00 00 00 00 00 00 00 00 00 00 00 00 00 -- 058BE0
00 00 00 00 00 00 00 00 00 00 00 00 00 00 00 00 -- 058BF0
00 00 00 00 00 00 00 00 00 00 00 00 00 00 01 FE -- 058C00
20 6F 6F 74 00 00 00 00 00 00 00 00 00 00 00 00 -- 058C10
64 70 75 00 0A 73 65 67 6E 61 72 20 79 6E 61 6D -- 058C20
33 5F 00 31 5F 00 6B 73 6D 64 70 75 00 6B 73 6D -- 058C30
01 00 02 00 00 80 00 00 00 07 00 05 00 35 5F 00 -- 058C40
00 02 00 01 00 00 00 00 00 08 00 04 00 02 00 01 -- 058C50
00 00 00 00 00 01 00 00 00 08 00 04 00 02 00 01 -- 058C60
00 00 00 00 00 00 00 00 00 00 00 00 00 00 00 08 -- 058C70
00 00 00 00 00 00 00 00 00 00 00 00 00 00 00 00 -- 058C80
00 00 00 00 00 00 00 00 00 00 00 00 00 00 00 00 -- 058C90
00 00 00 00 00 00 00 00 00 00 00 00 00 00 00 00 -- 058CA0
00 00 00 00 00 00 00 00 00 00 00 00 00 00 00 00 -- 058CB0
00 00 00 00 00 00 00 00 00 00 00 00 00 00 00 00 -- 058CC0
00 00 00 00 00 00 00 00 00 00 00 00 00 00 00 00 -- 058CD0
00 00 00 00 00 00 00 00 00 00 00 00 00 00 00 00 -- 058CE0
00 00 00 00 00 00 00 00 00 00 00 00 00 00 00 00 -- 058CF0

00 00 00 00 00 00 00 00 00 00 00 00 00 00 00 00 -- 058D00
00 00 00 00 00 00 00 00 00 00 00 00 00 00 00 00 -- 058D10
00 00 00 00 00 00 00 00 00 00 00 00 00 00 00 00 -- 058D20
00 00 00 00 00 00 00 00 00 00 00 00 00 00 00 00 -- 058D30
00 00 00 00 00 00 00 00 00 00 00 00 00 00 00 00 -- 058D40
00 00 00 00 00 00 00 00 00 00 00 00 00 00 00 00 -- 058D50
00 00 00 00 00 00 00 00 00 00 00 00 00 00 00 00 -- 058D60
00 00 00 00 00 00 00 00 00 00 00 00 00 00 00 00 -- 058D70
00 00 00 00 00 00 00 00 00 00 00 00 00 00 00 00 -- 058D80
00 00 00 00 00 00 00 00 00 00 00 00 00 00 00 00 -- 058D90
00 00 00 00 00 00 00 00 00 00 00 00 00 00 00 00 -- 058DA0
00 00 00 00 00 00 00 00 00 00 00 00 00 00 00 00 -- 058DB0
00 00 00 00 00 00 00 00 00 00 00 00 00 00 00 00 -- 058DC0
00 00 00 00 00 00 00 00 00 00 00 00 00 00 00 00 -- 058DD0
00 00 00 00 00 00 00 00 00 00 00 00 00 00 00 00 -- 058DE0
00 00 00 00 00 00 00 00 00 00 00 00 00 00 00 00 -- 058DF0
00 00 00 00 00 00 00 00 00 00 00 00 00 00 01 FE -- 058E00
00 00 00 00 00 00 00 00 00 00 00 00 00 00 00 00 -- 058E10
00 00 00 00 00 00 00 00 00 00 00 00 00 00 00 00 -- 058E20
00 00 00 00 00 00 00 00 00 00 00 00 00 00 00 00 -- 058E30
00 00 00 00 00 00 00 00 00 00 00 00 00 00 00 00 -- 058E40
00 00 00 00 00 00 00 00 00 00 00 00 00 00 00 00 -- 058E50
00 00 00 00 00 00 00 00 00 00 00 00 00 00 00 00 -- 058E60
00 00 00 00 00 00 00 00 00 00 00 00 00 00 00 00 -- 058E70
00 00 00 00 00 00 00 00 00 00 00 00 00 00 00 00 -- 058E80
00 00 00 00 00 00 00 00 00 00 00 00 00 00 00 00 -- 058E90
00 00 00 00 00 00 00 00 00 00 00 00 00 00 00 00 -- 058EA0
00 00 00 00 00 00 00 00 00 00 00 00 00 00 00 00 -- 058EB0
00 00 00 00 00 00 00 00 00 00 00 00 00 00 00 00 -- 058EC0
00 00 00 00 00 00 00 00 00 00 00 00 00 00 00 00 -- 058ED0
00 00 00 00 00 00 00 00 00 00 00 00 00 00 00 00 -- 058EE0
00 00 00 00 00 00 00 00 00 00 00 00 00 00 00 00 -- 058EF0
```

```
00 00 00 00 00 00 00 00 00 00 00 00 00 00 00 00 -- 058F00
00 00 00 00 00 00 00 00 00 00 00 00 00 00 00 00 -- 058F10
00 00 00 00 00 00 00 00 00 00 00 00 00 00 00 00 -- 058F20
00 00 00 00 00 00 00 00 00 00 00 00 00 00 00 00 -- 058F30
00 00 00 00 00 00 00 00 00 00 00 00 00 00 00 00 -- 058F40
00 00 00 00 00 00 00 00 00 00 00 00 00 00 00 00 -- 058F50
00 00 00 00 00 00 00 00 00 00 00 00 00 00 00 00 -- 058F60
00 00 00 00 00 00 00 00 00 00 00 00 00 00 00 00 -- 058F70
00 00 00 00 00 00 00 00 00 00 00 00 00 00 00 00 -- 058F80
00 00 00 00 00 00 00 00 00 00 00 00 00 00 00 00 -- 058F90
00 00 00 00 00 00 00 00 00 00 00 00 00 00 00 00 -- 058FA0
00 00 00 00 00 00 00 00 00 00 00 00 00 00 00 00 -- 058FB0
00 00 00 00 00 00 00 00 00 00 00 00 00 00 00 00 -- 058FC0
00 00 00 00 00 00 00 00 00 00 00 00 00 00 00 00 -- 058FD0
00 00 00 00 00 00 00 00 00 00 00 00 00 00 00 00 -- 058FE0
00 00 00 00 00 00 00 00 00 00 00 00 00 00 00 00 -- 058FF0
00 00 00 00 00 00 00 00 00 00 00 00 00 00 01 FE -- 059000
00 00 00 00 00 00 00 00 00 00 00 00 00 00 00 00 -- 059010
00 00 00 00 00 00 00 00 00 00 00 00 00 00 00 00 -- 059020
00 00 00 00 00 00 00 00 00 00 00 00 00 00 00 00 -- 059030
00 00 00 00 00 00 00 00 00 00 00 00 00 00 00 00 -- 059040
00 00 00 00 00 00 00 00 00 00 00 00 00 00 00 00 -- 059050
00 00 00 00 00 00 00 00 00 00 00 00 00 00 00 00 -- 059060
00 00 00 00 00 00 00 00 00 00 00 00 00 00 00 00 -- 059070
00 00 00 00 00 00 00 00 00 00 00 00 00 00 00 00 -- 059080
00 00 00 00 00 00 00 00 00 00 00 00 00 00 00 00 -- 059090

00 00 00 00 00 00 00 00 00 00 00 00 00 00 00 00 -- 0590A0
00 00 00 00 00 00 00 00 00 00 00 00 00 00 00 00 -- 0590B0
00 00 00 00 00 00 00 00 00 00 00 00 00 00 00 00 -- 0590C0
00 00 00 00 00 00 00 00 00 00 00 00 00 00 00 00 -- 0590D0
00 00 00 00 00 00 00 00 00 00 00 00 00 00 00 00 -- 0590E0
00 00 00 00 00 00 00 00 00 00 00 00 00 00 00 00 -- 0590F0
00 00 00 00 00 00 00 00 00 00 00 00 00 00 00 00 -- 059100
00 00 00 00 00 00 00 00 00 00 00 00 00 00 00 00 -- 059110
00 00 00 00 00 00 00 00 00 00 00 00 00 00 00 00 -- 059120
00 00 00 00 00 00 00 00 00 00 00 00 00 00 00 00 -- 059130
00 00 00 00 00 00 00 00 00 00 00 00 00 00 00 00 -- 059140
00 00 00 00 00 00 00 00 00 00 00 00 00 00 00 00 -- 059150
00 00 00 00 00 00 00 00 00 00 00 00 00 00 00 00 -- 059160
00 00 00 00 00 00 00 00 00 00 00 00 00 00 00 00 -- 059170
00 00 00 00 00 00 00 00 00 00 00 00 00 00 00 00 -- 059180
00 00 00 00 00 00 00 00 00 00 00 00 00 00 00 00 -- 059190
00 00 00 00 00 00 00 00 00 00 00 00 00 00 00 00 -- 0591A0
00 00 00 00 00 00 00 00 00 00 00 00 00 00 00 00 -- 0591B0
00 00 00 00 00 00 00 00 00 00 00 00 00 00 00 00 -- 0591C0
00 00 00 00 00 00 00 00 00 00 00 00 00 00 00 00 -- 0591D0
00 00 00 00 00 00 00 00 00 00 00 00 00 00 00 00 -- 0591E0
00 00 00 00 00 00 00 00 00 00 00 00 00 00 00 00 -- 0591F0
00 00 00 00 00 00 00 00 00 00 00 00 00 00 01 FE -- 059200
00 00 00 00 00 00 00 00 00 00 00 00 00 00 00 00 -- 059210
00 00 00 00 00 00 00 00 00 00 00 00 00 00 00 00 -- 059220
00 00 00 00 00 00 00 00 00 00 00 00 00 00 00 00 -- 059230
00 00 00 00 00 00 00 00 00 00 00 00 00 00 00 00 -- 059240
00 00 00 00 00 00 00 00 00 00 00 00 00 00 00 00 -- 059250
00 00 00 00 00 00 00 00 00 00 00 00 00 00 00 00 -- 059260
00 00 00 00 00 00 00 00 00 00 00 00 00 00 00 00 -- 059270
00 00 00 00 00 00 00 00 00 00 00 00 00 00 00 00 -- 059280
00 00 00 00 00 00 00 00 00 00 00 00 00 00 00 00 -- 059290
00 00 00 00 00 00 00 00 00 00 00 00 00 00 00 00 -- 0592A0
```

```
00 00 00 00 00 00 00 00 00 00 00 00 00 00 00 00 -- 0592B0
00 00 00 00 00 00 00 00 00 00 00 00 00 00 00 00 -- 0592C0
00 00 00 00 00 00 00 00 00 00 00 00 00 00 00 00 -- 0592D0
00 00 00 00 00 00 00 00 00 00 00 00 00 00 00 00 -- 0592E0
00 00 00 00 00 00 00 00 00 00 00 00 00 00 00 00 -- 0592F0
00 00 00 00 00 00 00 00 00 00 00 00 00 00 00 00 -- 059300
00 00 00 00 00 00 00 00 00 00 00 00 00 00 00 00 -- 059310
00 00 00 00 00 00 00 00 00 00 00 00 00 00 00 00 -- 059320
00 00 00 00 00 00 00 00 00 00 00 00 00 00 00 00 -- 059330
00 00 00 00 00 00 00 00 00 00 00 00 00 00 00 00 -- 059340
00 00 00 00 00 00 00 00 00 00 00 00 00 00 00 00 -- 059350
00 00 00 00 00 00 00 00 00 00 00 00 00 00 00 00 -- 059360
00 00 00 00 00 00 00 00 00 00 00 00 00 00 00 00 -- 059370
00 00 00 00 00 00 00 00 00 00 00 00 00 00 00 00 -- 059380
00 00 00 00 00 00 00 00 00 00 00 00 00 00 00 00 -- 059390
00 00 00 00 00 00 00 00 00 00 00 00 00 00 00 00 -- 0593A0
00 00 00 00 00 00 00 00 00 00 00 00 00 00 00 00 -- 0593B0
00 00 00 00 00 00 00 00 00 00 00 00 00 00 00 00 -- 0593C0
00 00 00 00 00 00 00 00 00 00 00 00 00 00 00 00 -- 0593D0
00 00 00 00 00 00 00 00 00 00 00 00 00 00 00 00 -- 0593E0
00 00 00 00 00 00 00 00 00 00 00 00 00 00 00 00 -- 0593F0
00 00 00 00 00 00 00 00 00 00 00 00 00 00 01 FE -- 059400
00 00 00 00 00 00 00 00 00 00 00 00 00 00 00 00 -- 059410
00 00 00 00 00 00 00 00 00 00 00 00 00 00 00 00 -- 059420
00 00 00 00 00 00 00 00 00 00 00 00 00 00 00 00 -- 059430

00 00 00 00 00 00 00 00 00 00 00 00 00 00 00 00 -- 059440
00 00 00 00 00 00 00 00 00 00 00 00 00 00 00 00 -- 059450
00 00 00 00 00 00 00 00 00 00 00 00 00 00 00 00 -- 059460
00 00 00 00 00 00 00 00 00 00 00 00 00 00 00 00 -- 059470
00 00 00 00 00 00 00 00 00 00 00 00 00 00 00 00 -- 059480
00 00 00 00 00 00 00 00 00 00 00 00 00 00 00 00 -- 059490
00 00 00 00 00 00 00 00 00 00 00 00 00 00 00 00 -- 0594A0
00 00 00 00 00 00 00 00 00 00 00 00 00 00 00 00 -- 0594B0
00 00 00 00 00 00 00 00 00 00 00 00 00 00 00 00 -- 0594C0
00 00 00 00 00 00 00 00 00 00 00 00 00 00 00 00 -- 0594D0
00 00 00 00 00 00 00 00 00 00 00 00 00 00 00 00 -- 0594E0
00 00 00 00 00 00 00 00 00 00 00 00 00 00 00 00 -- 0594F0
00 00 00 00 00 00 00 00 00 00 00 00 00 00 00 00 -- 059500
00 00 00 00 00 00 00 00 00 00 00 00 00 00 00 00 -- 059510
00 00 00 00 00 00 00 00 00 00 00 00 00 00 00 00 -- 059520
00 00 00 00 00 00 00 00 00 00 00 00 00 00 00 00 -- 059530
00 00 00 00 00 00 00 00 00 00 00 00 00 00 00 00 -- 059540
00 00 00 00 00 00 00 00 00 00 00 00 00 00 00 00 -- 059550
00 00 00 00 00 00 00 00 00 00 00 00 00 00 00 00 -- 059560
00 00 00 00 00 00 00 00 00 00 00 00 00 00 00 00 -- 059570
00 00 00 00 00 00 00 00 00 00 00 00 00 00 00 00 -- 059580
00 00 00 00 00 00 00 00 00 00 00 00 00 00 00 00 -- 059590
00 00 00 00 00 00 00 00 00 00 00 00 00 00 00 00 -- 0595A0
00 00 00 00 00 00 00 00 00 00 00 00 00 00 00 00 -- 0595B0
00 00 00 00 00 00 00 00 00 00 00 00 00 00 00 00 -- 0595C0
00 00 00 00 00 00 00 00 00 00 00 00 00 00 00 00 -- 0595D0
00 00 00 00 00 00 00 00 00 00 00 00 00 00 00 00 -- 0595E0
00 00 00 00 00 00 00 00 00 00 00 00 00 00 00 00 -- 0595F0
00 00 00 00 00 00 00 00 00 00 00 00 00 00 01 FE -- 059600
00 00 00 00 00 00 00 00 00 00 00 00 00 00 00 00 -- 059610
00 00 00 00 00 00 00 00 00 00 00 00 00 00 00 00 -- 059620
00 00 00 00 00 00 00 00 00 00 00 00 00 00 00 00 -- 059630
00 00 00 00 00 00 00 00 00 00 00 00 00 00 00 00 -- 059640
00 00 00 00 00 00 00 00 00 00 00 00 00 00 00 00 -- 059650
```

```
00 00 00 00 00 00 00 00 00 00 00 00 00 00 00 00 -- 059660
00 00 00 00 00 00 00 00 00 00 00 00 00 00 00 00 -- 059670
00 00 00 00 00 00 00 00 00 00 00 00 00 00 00 00 -- 059680
00 00 00 00 00 00 00 00 00 00 00 00 00 00 00 00 -- 059690
00 00 00 00 00 00 00 00 00 00 00 00 00 00 00 00 -- 0596A0
00 00 00 00 00 00 00 00 00 00 00 00 00 00 00 00 -- 0596B0
00 00 00 00 00 00 00 00 00 00 00 00 00 00 00 00 -- 0596C0
00 00 00 00 00 00 00 00 00 00 00 00 00 00 00 00 -- 0596D0
00 00 00 00 00 00 00 00 00 00 00 00 00 00 00 00 -- 0596E0
00 00 00 00 00 00 00 00 00 00 00 00 00 00 00 00 -- 0596F0
00 00 00 00 00 00 00 00 00 00 00 00 00 00 00 00 -- 059700
00 00 00 00 00 00 00 00 00 00 00 00 00 00 00 00 -- 059710
00 00 00 00 00 00 00 00 00 00 00 00 00 00 00 00 -- 059720
00 00 00 00 00 00 00 00 00 00 00 00 00 00 00 00 -- 059730
00 00 00 00 00 00 00 00 00 00 00 00 00 00 00 00 -- 059740
00 00 00 00 00 00 00 00 00 00 00 00 00 00 00 00 -- 059750
00 00 00 00 00 00 00 00 00 00 00 00 00 00 00 00 -- 059760
00 00 00 00 00 00 00 00 00 00 00 00 00 00 00 00 -- 059770
00 00 00 00 00 00 00 00 00 00 00 00 00 00 00 00 -- 059780
00 00 00 00 00 00 00 00 00 00 00 00 00 00 00 00 -- 059790
00 00 00 00 00 00 00 00 00 00 00 00 00 00 00 00 -- 0597A0
00 00 00 00 00 00 00 00 00 00 00 00 00 00 00 00 -- 0597B0
00 00 00 00 00 00 00 00 00 00 00 00 00 00 00 00 -- 0597C0
00 00 00 00 00 00 00 00 00 00 00 00 00 00 00 00 -- 0597D0

00 00 00 00 00 00 00 00 00 00 00 00 00 00 00 00 -- 0597E0
00 00 00 00 00 00 00 00 00 00 00 00 00 00 00 00 -- 0597F0
00 00 00 00 00 00 00 00 00 00 00 00 00 00 01 FE -- 059800
00 00 00 00 00 00 00 00 00 00 00 00 00 00 00 00 -- 059810
00 00 00 00 00 00 00 00 00 00 00 00 00 00 00 00 -- 059820
00 00 00 00 00 00 00 00 00 00 00 00 00 00 54 43 -- 059830
00 00 00 00 00 00 00 00 00 00 00 00 00 00 00 00 -- 059840
00 00 00 00 00 00 00 00 00 00 00 00 00 00 00 00 -- 059850
00 00 00 00 00 00 00 00 00 00 00 00 00 00 00 00 -- 059860
00 00 00 00 00 00 00 00 00 00 00 00 00 00 00 00 -- 059870
00 00 00 00 00 00 00 00 00 00 00 00 00 00 00 00 -- 059880
00 00 00 00 00 00 00 00 00 00 00 00 00 00 00 00 -- 059890
00 00 00 00 00 00 00 00 00 00 00 00 00 00 00 00 -- 0598A0
00 00 00 00 00 00 00 00 00 00 00 00 00 00 00 00 -- 0598B0
00 00 00 00 00 00 00 00 00 00 00 00 00 00 00 00 -- 0598C0
00 00 00 00 00 00 00 00 00 00 00 00 00 00 00 00 -- 0598D0
00 00 00 00 00 00 00 00 00 00 00 00 00 00 00 00 -- 0598E0
00 00 00 00 00 00 00 00 00 00 00 00 00 00 00 00 -- 0598F0
00 00 00 00 00 00 00 00 00 00 00 00 00 00 00 00 -- 059900
00 00 00 00 00 00 00 00 00 00 00 00 00 00 00 00 -- 059910
00 00 00 00 00 00 00 00 00 00 00 00 00 00 00 00 -- 059920
00 00 00 00 00 00 00 00 00 00 00 00 00 00 00 00 -- 059930
00 00 00 00 00 00 00 00 00 00 00 00 00 00 00 00 -- 059940
00 00 00 00 00 00 00 00 00 00 00 00 00 00 00 00 -- 059950
00 00 00 00 00 00 00 00 00 00 00 00 00 00 00 00 -- 059960
00 00 00 00 00 00 00 00 00 00 00 00 00 00 00 00 -- 059970
00 00 00 00 00 00 00 00 00 00 00 00 00 00 00 00 -- 059980
00 00 00 00 00 00 00 00 00 00 00 00 00 00 00 00 -- 059990
00 00 00 00 00 00 00 00 00 00 00 00 00 00 00 00 -- 0599A0
00 00 00 00 00 00 00 00 00 00 00 00 00 00 00 00 -- 0599B0
00 00 00 00 00 00 00 00 00 00 00 00 00 00 00 00 -- 0599C0
00 00 00 00 00 00 00 00 00 00 00 00 00 00 00 00 -- 0599D0
00 00 00 00 00 00 00 00 00 00 00 00 00 00 00 00 -- 0599E0
00 00 00 00 00 00 00 00 00 00 00 00 00 00 00 00 -- 0599F0
00 00 00 00 00 00 00 00 00 00 00 00 00 00 01 FE -- 059A00
```

```
00 00 00 00 00 00 00 00 00 00 00 00 00 00 00 00 -- 059A10
00 00 00 00 00 00 00 00 00 00 00 00 00 00 00 00 -- 059A20
00 00 00 00 00 00 00 00 00 00 00 00 00 00 00 00 -- 059A30
00 00 00 00 00 00 00 00 00 00 00 00 00 00 00 00 -- 059A40
00 00 00 00 00 00 00 00 00 00 00 00 00 00 00 00 -- 059A50
00 00 00 00 00 00 00 00 00 00 00 00 00 00 00 00 -- 059A60
00 00 00 00 00 00 00 00 00 00 00 00 00 00 00 00 -- 059A70
00 00 00 00 00 00 00 00 00 00 00 00 00 00 00 00 -- 059A80
00 00 00 00 00 00 00 00 00 00 00 00 00 00 00 00 -- 059A90
00 00 00 00 00 00 00 00 00 00 00 00 00 00 00 00 -- 059AA0
00 00 00 00 00 00 00 00 00 00 00 00 00 00 00 00 -- 059AB0
00 00 00 00 00 00 00 00 00 00 00 00 00 00 00 00 -- 059AC0
00 00 00 00 00 00 00 00 00 00 00 00 00 00 00 00 -- 059AD0
00 00 00 00 00 00 00 00 00 00 00 00 00 00 00 00 -- 059AE0
00 00 00 00 00 00 00 00 00 00 00 00 00 00 00 00 -- 059AF0
00 00 00 00 00 00 00 00 00 00 00 00 00 00 00 00 -- 059B00
00 00 00 00 00 00 00 00 00 00 00 00 00 00 00 00 -- 059B10
00 00 00 00 00 00 00 00 00 00 00 00 00 00 00 00 -- 059B20
00 00 00 00 00 00 00 00 00 00 00 00 00 00 00 00 -- 059B30
00 00 00 00 00 00 00 00 00 00 00 00 00 00 00 00 -- 059B40
00 00 00 00 00 00 00 00 00 00 00 00 00 00 00 00 -- 059B50
00 00 00 00 00 00 00 00 00 00 00 00 00 00 00 00 -- 059B60
00 00 00 00 00 00 00 00 00 00 00 00 00 00 00 00 -- 059B70

00 00 00 00 00 00 00 00 00 00 00 00 00 00 00 00 -- 059B80
00 00 00 00 00 00 00 00 00 00 00 00 00 00 00 00 -- 059B90
00 00 00 00 00 00 00 00 00 00 00 00 00 00 00 00 -- 059BA0
00 00 00 00 00 00 00 00 00 00 00 00 00 00 00 00 -- 059BB0
00 00 00 00 00 00 00 00 00 00 00 00 00 00 00 00 -- 059BC0
00 00 00 00 00 00 00 00 00 00 00 00 00 00 00 00 -- 059BD0
00 00 00 00 00 00 00 00 00 00 00 00 00 00 00 00 -- 059BE0
00 00 00 00 00 00 00 00 00 00 00 00 00 00 00 00 -- 059BF0
00 00 00 00 00 00 00 00 00 00 00 00 00 00 01 FE -- 059C00
00 00 00 00 00 00 00 00 00 00 00 00 00 00 00 00 -- 059C10
00 00 00 00 00 0C 00 00 00 00 00 00 00 00 00 00 -- 059C20
00 00 00 00 00 00 00 00 00 00 00 00 00 00 00 00 -- 059C30
00 00 00 00 00 00 00 00 00 00 00 00 00 00 00 00 -- 059C40
00 00 00 00 00 00 00 00 00 00 00 00 00 00 00 00 -- 059C50
00 00 00 00 00 00 00 00 00 00 00 00 00 00 00 00 -- 059C60
00 00 00 00 00 00 00 00 00 00 00 00 00 00 00 00 -- 059C70
00 00 00 00 00 00 00 00 00 00 00 00 00 00 00 00 -- 059C80
00 00 00 00 00 00 00 00 00 00 00 00 00 00 00 00 -- 059C90
00 00 00 00 00 00 00 00 00 00 00 00 00 00 00 00 -- 059CA0
00 00 00 00 00 00 00 00 00 00 00 00 00 00 00 00 -- 059CB0
00 00 00 00 00 00 00 00 00 00 00 00 00 00 00 00 -- 059CC0
00 00 00 00 00 00 00 00 00 00 00 00 00 00 00 00 -- 059CD0
00 00 00 00 00 00 00 00 00 00 00 00 00 00 00 00 -- 059CE0
00 00 00 00 00 00 00 00 00 00 00 00 00 00 00 00 -- 059CF0
00 00 00 00 00 00 00 00 00 00 00 00 00 00 00 00 -- 059D00
00 00 00 00 00 00 00 00 00 00 00 00 00 00 00 00 -- 059D10
00 00 00 00 00 00 00 00 00 00 00 00 00 00 00 00 -- 059D20
00 00 00 00 00 00 00 00 00 00 00 00 00 00 00 00 -- 059D30
00 00 00 00 00 00 00 00 00 00 00 00 00 00 00 00 -- 059D40
00 00 00 00 00 00 00 00 00 00 00 00 00 00 00 00 -- 059D50
00 00 00 00 00 00 00 00 00 00 00 00 00 00 00 00 -- 059D60
00 00 00 00 00 00 00 00 00 00 00 00 00 00 00 00 -- 059D70
00 00 00 00 00 00 00 00 00 00 00 00 00 00 00 00 -- 059D80
00 00 00 00 00 00 00 00 00 00 00 00 00 00 00 00 -- 059D90
00 00 00 00 00 00 00 00 00 00 00 00 00 00 00 00 -- 059DA0
00 00 00 00 00 00 00 00 00 00 00 00 00 00 00 00 -- 059DB0
```

```
00 00 00 00 00 00 00 00 00 00 00 00 00 00 00 00 -- 059DC0
00 00 00 00 00 00 00 00 00 00 00 00 00 00 00 00 -- 059DD0
00 00 00 00 00 00 00 00 00 00 00 00 00 00 00 00 -- 059DE0
00 00 00 00 00 00 00 00 00 00 00 00 00 00 00 00 -- 059DF0
00 00 00 00 00 00 00 00 00 00 00 00 00 00 01 FE -- 059E00
00 00 00 00 00 00 00 00 00 00 00 00 00 00 00 00 -- 059E10
00 00 00 00 00 00 00 00 00 00 00 00 00 00 00 00 -- 059E20
00 00 00 00 00 00 00 00 00 00 00 00 00 00 00 00 -- 059E30
00 00 00 00 00 00 00 00 00 00 00 00 00 00 00 00 -- 059E40
00 00 00 00 00 00 00 00 00 00 00 00 00 00 00 00 -- 059E50
00 00 00 00 00 00 00 00 00 00 00 00 00 00 00 00 -- 059E60
00 00 00 00 00 00 00 00 00 00 00 00 00 00 00 00 -- 059E70
00 00 00 00 00 00 00 00 00 00 00 00 00 00 00 00 -- 059E80
00 00 00 00 00 00 00 00 00 00 00 00 00 00 00 00 -- 059E90
00 00 00 00 00 00 00 00 00 00 00 00 00 00 00 00 -- 059EA0
00 00 00 00 00 00 00 00 00 00 00 00 00 00 00 00 -- 059EB0
00 00 00 00 00 00 00 00 00 00 00 00 00 00 00 00 -- 059EC0
00 00 00 00 00 00 00 00 00 00 00 00 00 00 00 00 -- 059ED0
00 00 00 00 00 00 00 00 00 00 00 00 00 00 00 00 -- 059EE0
00 00 00 00 00 00 00 00 00 00 00 00 00 00 00 00 -- 059EF0
00 00 00 00 00 00 00 00 00 00 00 00 00 00 00 00 -- 059F00
00 00 00 00 00 00 00 00 00 00 00 00 00 00 00 00 -- 059F10

00 00 00 00 00 00 00 00 00 00 00 00 00 00 00 00 -- 059F20
00 00 00 00 00 00 00 00 00 00 00 00 00 00 00 00 -- 059F30
00 00 00 00 00 00 00 00 00 00 00 00 00 00 00 00 -- 059F40
00 00 00 00 00 00 00 00 00 00 00 00 00 00 00 00 -- 059F50
00 00 00 00 00 00 00 00 00 00 00 00 00 00 00 00 -- 059F60
00 00 00 00 00 00 00 00 00 00 00 00 00 00 00 00 -- 059F70
00 00 00 00 00 00 00 00 00 00 00 00 00 00 00 00 -- 059F80
00 00 00 00 00 00 00 00 00 00 00 00 00 00 00 00 -- 059F90
00 00 00 00 00 00 00 00 00 00 00 00 00 00 00 00 -- 059FA0
00 00 00 00 00 00 00 00 00 00 00 00 00 00 00 00 -- 059FB0
00 00 00 00 00 00 00 00 00 00 00 00 00 00 00 00 -- 059FC0
00 00 00 00 00 00 00 00 00 00 00 00 00 00 00 00 -- 059FD0
00 00 00 00 00 00 00 00 00 00 00 00 00 00 00 00 -- 059FE0
00 00 00 00 00 00 00 00 00 00 00 00 00 00 00 00 -- 059FF0
00 00 00 00 00 00 00 00 00 00 00 00 00 00 01 FE -- 05A000
00 00 00 00 00 00 00 00 00 00 00 00 00 00 00 00 -- 05A010
00 00 00 00 00 00 00 00 00 00 00 00 00 00 00 00 -- 05A020
00 00 00 00 00 00 00 00 00 00 00 00 00 00 00 00 -- 05A030
00 00 00 00 00 00 00 00 00 00 00 00 00 00 00 00 -- 05A040
00 00 00 00 00 00 00 00 00 00 00 00 00 00 00 00 -- 05A050
00 00 00 00 00 00 00 00 00 00 00 00 00 00 00 00 -- 05A060
00 00 00 00 00 00 00 00 00 00 00 00 00 00 00 00 -- 05A070
00 00 00 00 00 00 00 00 00 00 00 00 00 00 00 00 -- 05A080
00 00 00 00 00 00 00 00 00 00 00 00 00 00 00 00 -- 05A090
00 00 00 00 00 00 00 00 00 00 00 00 00 00 00 00 -- 05A0A0
00 00 00 00 00 00 00 00 00 00 00 00 00 00 00 00 -- 05A0B0
00 00 00 00 00 00 00 00 00 00 00 00 00 00 00 00 -- 05A0C0
00 00 00 00 00 00 00 00 00 00 00 00 00 00 00 00 -- 05A0D0
00 00 00 00 00 00 00 00 00 00 00 00 00 00 00 00 -- 05A0E0
00 00 00 00 00 00 00 00 00 00 00 00 00 00 00 00 -- 05A0F0
00 00 00 00 00 00 00 00 00 00 00 00 00 00 00 00 -- 05A100
00 00 00 00 00 00 00 00 00 00 00 00 00 00 00 00 -- 05A110
00 00 00 00 00 00 00 00 00 00 00 00 00 00 00 00 -- 05A120
00 00 00 00 00 00 00 00 00 00 00 00 00 00 00 00 -- 05A130
00 00 00 00 00 00 00 00 00 00 00 00 00 00 00 00 -- 05A140
00 00 00 00 00 00 00 00 00 00 00 00 00 00 00 00 -- 05A150
00 00 00 00 00 00 00 00 00 00 00 00 00 00 00 00 -- 05A160
```

```
00 00 00 00 00 00 00 00 00 00 00 00 00 00 00 00 -- 05A170
00 00 00 00 00 00 00 00 00 00 00 00 00 00 00 00 -- 05A180
00 00 00 00 00 00 00 00 00 00 00 00 00 00 00 00 -- 05A190
00 00 00 00 00 00 00 00 00 00 00 00 00 00 00 00 -- 05A1A0
00 00 00 00 00 00 00 00 00 00 00 00 00 00 00 00 -- 05A1B0
00 00 00 00 00 00 00 00 00 00 00 00 00 00 00 00 -- 05A1C0
00 00 00 00 00 00 00 00 00 00 00 00 00 00 00 00 -- 05A1D0
00 00 00 00 00 00 00 00 00 00 00 00 00 00 00 00 -- 05A1E0
00 00 00 00 00 00 00 00 00 00 00 00 00 00 00 00 -- 05A1F0
00 00 00 00 00 00 00 00 00 00 00 00 00 00 01 FE -- 05A200
00 00 00 00 00 00 00 00 00 00 00 00 00 00 00 00 -- 05A210
00 00 00 00 00 00 00 00 00 00 00 00 00 00 00 00 -- 05A220
00 00 00 00 00 00 00 00 00 00 00 00 00 00 00 00 -- 05A230
00 00 00 00 00 00 00 00 00 00 00 00 00 00 00 00 -- 05A240
00 00 00 00 00 00 00 00 00 00 00 00 00 00 00 00 -- 05A250
00 00 00 00 00 00 00 00 00 00 00 00 00 00 00 00 -- 05A260
00 00 00 00 00 00 00 00 00 00 00 00 00 00 00 00 -- 05A270
00 00 00 00 00 00 00 00 00 00 00 00 00 00 00 00 -- 05A280
00 00 00 00 00 00 00 00 00 00 00 00 00 00 00 00 -- 05A290
00 00 00 00 00 00 00 00 00 00 00 00 00 00 00 00 -- 05A2A0
00 00 00 00 00 00 00 00 00 00 00 00 00 00 00 00 -- 05A2B0

00 00 00 00 00 00 00 00 00 00 00 00 00 00 00 00 -- 05A2C0
00 00 00 00 00 00 00 00 00 00 00 00 00 00 00 00 -- 05A2D0
00 00 00 00 00 00 00 00 00 00 00 00 00 00 00 00 -- 05A2E0
00 00 00 00 00 00 00 00 00 00 00 00 00 00 00 00 -- 05A2F0
00 00 00 00 00 00 00 00 00 00 00 00 00 00 00 00 -- 05A300
00 00 00 00 00 00 00 00 00 00 00 00 00 00 00 00 -- 05A310
00 00 00 00 00 00 00 00 00 00 00 00 00 00 00 00 -- 05A320
00 00 00 00 00 00 00 00 00 00 00 00 00 00 00 00 -- 05A330
00 00 00 00 00 00 00 00 00 00 00 00 00 00 00 00 -- 05A340
00 00 00 00 00 00 00 00 00 00 00 00 00 00 00 00 -- 05A350
00 00 00 00 00 00 00 00 00 00 00 00 00 00 00 00 -- 05A360
00 00 00 00 00 00 00 00 00 00 00 00 00 00 00 00 -- 05A370
00 00 00 00 00 00 00 00 00 00 00 00 00 00 00 00 -- 05A380
00 00 00 00 00 00 00 00 00 00 00 00 00 00 00 00 -- 05A390
00 00 00 00 00 00 00 00 00 00 00 00 00 00 00 00 -- 05A3A0
00 00 00 00 00 00 00 00 00 00 00 00 00 00 00 00 -- 05A3B0
00 00 00 00 00 00 00 00 00 00 00 00 00 00 00 00 -- 05A3C0
00 00 00 00 00 00 00 00 00 00 00 00 00 00 00 00 -- 05A3D0
00 00 00 00 00 00 00 00 00 00 00 00 00 00 00 00 -- 05A3E0
20 73 25 20 20 0A 00 00 00 00 00 00 00 00 00 00 -- 05A3F0
50 53 74 72 61 74 53 00 0A 20 44 25 00 0A 01 FE -- 05A400
5F 53 50 53 74 72 61 74 53 00 74 69 6E 49 5F 53 -- 05A410
00 00 00 00 00 00 00 00 00 01 00 00 00 64 6E 45 -- 05A420
00 00 00 00 00 00 00 00 00 00 00 00 00 00 00 00 -- 05A430
00 00 00 00 00 00 00 00 00 00 00 00 00 00 00 00 -- 05A440
00 00 00 00 00 00 00 00 00 00 00 00 00 00 00 00 -- 05A450
00 00 00 00 00 00 00 00 00 00 00 00 00 00 00 00 -- 05A460
00 00 00 00 00 00 00 00 00 00 00 00 00 00 00 00 -- 05A470
00 00 00 00 00 00 00 00 00 00 00 00 00 00 00 00 -- 05A480
00 00 00 00 00 00 00 00 00 00 00 00 00 00 00 00 -- 05A490
00 00 00 00 00 00 00 00 00 00 00 00 00 00 00 00 -- 05A4A0
00 00 00 00 00 00 00 00 00 00 00 00 00 00 00 00 -- 05A4B0
00 00 00 00 00 00 00 00 00 00 00 00 00 00 00 00 -- 05A4C0
00 00 00 00 00 00 00 00 00 00 00 00 00 00 00 00 -- 05A4D0
00 00 00 00 00 00 00 00 00 00 00 00 00 00 00 00 -- 05A4E0
00 00 00 00 00 00 00 00 00 00 00 00 00 00 00 00 -- 05A4F0
00 00 00 00 00 00 00 00 00 00 00 00 00 00 00 00 -- 05A500
00 00 00 00 00 00 00 00 00 00 00 00 00 00 00 00 -- 05A510
```

```
00 00 00 00 00 00 00 00 00 00 00 00 00 00 00 00 -- 05A520
00 00 00 00 00 00 00 00 00 00 00 00 00 00 00 00 -- 05A530
00 00 00 00 00 00 00 00 00 00 00 00 00 00 00 00 -- 05A540
00 00 00 00 00 00 00 00 00 00 00 00 00 00 00 00 -- 05A550
00 00 00 00 00 00 00 00 00 00 00 00 00 00 00 00 -- 05A560
00 00 00 00 00 00 00 00 00 00 00 00 00 00 00 00 -- 05A570
00 00 00 00 00 00 00 00 00 00 00 00 00 00 00 00 -- 05A580
00 00 00 00 00 00 00 00 00 00 00 00 00 00 00 00 -- 05A590
00 00 00 00 00 00 00 00 00 00 00 00 00 00 00 00 -- 05A5A0
00 00 00 00 00 00 00 00 00 00 00 00 00 00 00 00 -- 05A5B0
00 00 00 00 00 00 00 00 00 00 00 00 00 00 00 00 -- 05A5C0
00 00 00 00 00 00 00 00 00 00 00 00 00 00 00 00 -- 05A5D0
00 00 00 00 00 00 00 00 00 00 00 00 00 00 00 00 -- 05A5E0
00 00 00 00 00 00 00 00 00 00 00 00 00 00 00 00 -- 05A5F0
00 00 00 00 00 00 00 00 00 00 00 00 00 00 01 FE -- 05A600
00 00 00 00 00 00 00 00 00 00 00 00 00 00 00 00 -- 05A610
00 00 00 00 00 00 00 00 00 00 00 00 00 00 00 00 -- 05A620
00 00 00 00 00 00 00 00 00 00 00 00 00 00 00 00 -- 05A630
00 00 00 00 00 00 00 00 00 00 00 00 00 00 00 00 -- 05A640
00 00 00 00 00 00 00 00 00 00 00 00 00 00 00 00 -- 05A650

00 00 00 00 00 00 00 00 00 00 00 00 00 00 00 00 -- 05A660
00 00 00 00 00 00 00 00 00 00 00 00 00 00 00 00 -- 05A670
00 00 00 00 00 00 00 00 00 00 00 00 00 00 00 00 -- 05A680
00 00 00 00 00 00 00 00 00 00 00 00 00 00 00 00 -- 05A690
00 00 00 00 00 00 00 00 00 00 00 00 00 00 00 00 -- 05A6A0
00 00 00 00 00 00 00 00 00 00 00 00 00 00 00 00 -- 05A6B0
00 00 00 00 00 00 00 00 00 00 00 00 00 00 00 00 -- 05A6C0
00 00 00 00 00 00 00 00 00 00 00 00 00 00 00 00 -- 05A6D0
00 00 00 00 00 00 00 00 00 00 00 00 00 00 00 00 -- 05A6E0
00 00 00 00 00 00 00 00 00 00 00 00 00 00 00 00 -- 05A6F0
00 00 00 00 00 00 00 00 00 00 00 00 00 00 00 00 -- 05A700
00 00 00 00 00 00 00 00 00 00 00 00 00 00 00 00 -- 05A710
00 00 00 00 00 00 00 00 00 00 00 00 00 00 00 00 -- 05A720
00 00 00 00 00 00 00 00 00 00 00 00 00 00 00 00 -- 05A730
00 00 00 00 00 00 00 00 00 00 00 00 00 00 00 00 -- 05A740
00 00 00 00 00 00 00 00 00 00 00 00 00 00 00 00 -- 05A750
00 00 00 00 00 00 00 00 00 00 00 00 00 00 00 00 -- 05A760
00 00 00 00 00 00 00 00 00 00 00 00 00 00 00 00 -- 05A770
00 00 00 00 00 00 00 00 00 00 00 00 00 00 00 00 -- 05A780
00 00 00 00 00 00 00 00 00 00 00 00 00 00 00 00 -- 05A790
00 00 00 00 00 00 00 00 00 00 00 00 00 00 00 00 -- 05A7A0
00 00 00 00 00 00 00 00 00 00 00 00 00 00 00 00 -- 05A7B0
00 00 00 00 00 00 00 00 00 00 00 00 00 00 00 00 -- 05A7C0
00 00 00 00 00 00 00 00 00 00 00 00 00 00 00 00 -- 05A7D0
00 00 00 00 00 00 00 00 00 00 00 00 00 00 00 00 -- 05A7E0
00 00 00 00 00 00 00 00 00 00 00 00 00 00 00 00 -- 05A7F0
00 00 00 00 00 00 00 00 00 00 00 00 00 00 01 FE -- 05A800
00 00 00 00 00 00 00 00 00 00 00 00 00 00 00 00 -- 05A810
00 00 00 00 00 00 00 00 00 00 00 00 00 00 00 00 -- 05A820
00 00 00 00 00 00 00 00 00 00 00 00 00 00 00 00 -- 05A830
00 00 00 00 00 00 00 00 00 00 00 00 00 00 00 00 -- 05A840
00 00 00 00 00 00 00 00 00 00 00 00 00 00 00 00 -- 05A850
00 00 00 00 00 00 00 00 00 00 00 00 00 00 00 00 -- 05A860
00 00 00 00 00 00 00 00 00 00 00 00 00 00 00 00 -- 05A870
00 00 00 00 00 00 00 00 00 00 00 00 00 00 00 00 -- 05A880
00 00 00 00 00 00 00 00 00 00 00 00 00 00 00 00 -- 05A890
00 00 00 00 00 00 00 00 00 00 00 00 00 00 00 00 -- 05A8A0
00 00 00 00 00 00 00 00 00 00 00 00 00 00 00 00 -- 05A8B0
00 00 00 00 00 00 00 00 00 00 00 00 00 00 00 00 -- 05A8C0
```

```
00 00 00 00 00 00 00 00 00 00 00 00 00 00 00 00 -- 05A8D0
00 00 00 00 00 00 00 00 00 00 00 00 00 00 00 00 -- 05A8E0
00 00 00 00 00 00 00 00 00 00 00 00 00 00 00 00 -- 05A8F0
00 00 00 00 00 00 00 00 00 00 00 00 00 00 00 00 -- 05A900
00 00 00 00 00 00 00 00 00 00 00 00 00 00 00 00 -- 05A910
00 00 00 00 00 00 00 00 00 00 00 00 00 00 00 00 -- 05A920
00 00 00 00 00 00 00 00 00 00 00 00 00 00 00 00 -- 05A930
00 00 00 00 00 00 00 00 00 00 00 00 00 00 00 00 -- 05A940
00 00 00 00 00 00 00 00 00 00 00 00 00 00 00 00 -- 05A950
00 00 00 00 00 00 00 00 00 00 00 00 00 00 00 00 -- 05A960
00 00 00 00 00 00 00 00 00 00 00 00 00 00 00 00 -- 05A970
00 00 00 00 00 00 00 00 00 00 00 00 00 00 00 00 -- 05A980
00 00 00 00 00 00 00 00 00 00 00 00 00 00 00 00 -- 05A990
00 00 00 00 00 00 00 00 00 00 00 00 00 00 00 00 -- 05A9A0
00 00 00 00 00 00 00 00 00 00 00 00 00 00 00 00 -- 05A9B0
00 00 00 00 00 00 00 00 00 00 00 00 00 00 00 00 -- 05A9C0
00 00 00 00 00 00 00 00 00 00 00 00 00 00 00 00 -- 05A9D0
00 00 00 00 00 00 00 00 00 00 00 00 00 00 00 00 -- 05A9E0
00 00 00 00 00 00 00 00 00 00 00 00 00 00 00 00 -- 05A9F0

00 00 00 00 00 00 00 00 00 00 00 00 00 00 01 FE -- 05AA00
00 00 00 00 00 00 00 00 00 00 00 00 00 00 00 00 -- 05AA10
00 00 00 00 00 00 00 00 00 00 00 00 00 00 00 00 -- 05AA20
00 00 00 00 00 00 00 00 00 00 00 00 00 00 00 00 -- 05AA30
00 00 00 00 00 00 00 00 00 00 00 00 00 00 00 00 -- 05AA40
00 00 00 00 00 00 00 00 00 00 00 00 00 00 00 00 -- 05AA50
00 00 00 00 00 00 00 00 00 00 00 00 00 00 00 00 -- 05AA60
00 00 00 00 00 00 00 00 00 00 00 00 00 00 00 00 -- 05AA70
00 00 00 00 00 00 00 00 00 00 00 00 00 00 00 00 -- 05AA80
00 00 00 00 00 00 00 00 00 00 00 00 00 00 00 00 -- 05AA90
00 00 00 00 00 00 00 00 00 00 00 00 00 00 00 00 -- 05AAA0
00 00 00 00 00 00 00 00 00 00 00 00 00 00 00 00 -- 05AAB0
00 00 00 00 00 00 00 00 00 00 00 00 00 00 00 00 -- 05AAC0
00 00 00 00 00 00 00 00 00 00 00 00 00 00 00 00 -- 05AAD0
00 00 00 00 00 00 00 00 00 00 00 00 00 00 00 00 -- 05AAE0
00 00 00 00 00 00 00 00 00 00 00 00 00 00 00 00 -- 05AAF0
00 00 00 00 00 00 00 00 00 00 00 00 00 00 00 00 -- 05AB00
00 00 00 00 00 00 00 00 00 00 00 00 00 00 00 00 -- 05AB10
00 00 00 00 00 00 00 00 00 00 00 00 00 00 00 00 -- 05AB20
00 00 00 00 00 00 00 00 00 00 00 00 00 00 00 00 -- 05AB30
00 00 00 00 00 00 00 00 00 00 00 00 00 00 00 00 -- 05AB40
00 00 00 00 00 00 00 00 00 00 00 00 00 00 00 00 -- 05AB50
00 00 00 00 00 00 00 00 00 00 00 00 00 00 00 00 -- 05AB60
00 00 00 00 00 00 00 00 00 00 00 00 00 00 00 00 -- 05AB70
00 00 00 00 00 00 00 00 00 00 00 00 00 00 00 00 -- 05AB80
00 00 00 00 00 00 00 00 00 00 00 00 00 00 00 00 -- 05AB90
00 00 00 00 00 00 00 00 00 00 00 00 00 00 00 00 -- 05ABA0
00 00 00 00 00 00 00 00 00 00 00 00 00 00 00 00 -- 05ABB0
00 00 00 00 00 00 00 00 00 00 00 00 00 00 00 00 -- 05ABC0
00 00 00 00 00 00 00 00 00 00 00 00 00 00 00 00 -- 05ABD0
00 00 00 00 00 00 00 00 00 00 00 00 00 00 00 00 -- 05ABE0
00 00 00 00 00 00 00 00 00 00 00 00 00 00 00 00 -- 05ABF0
00 00 00 00 00 00 00 00 00 00 00 00 00 00 01 FE -- 05AC00
00 00 00 00 00 00 00 00 00 00 00 00 00 00 00 00 -- 05AC10
00 00 00 00 00 00 00 00 00 00 00 00 00 00 00 00 -- 05AC20
00 00 00 00 00 00 00 00 00 00 00 00 00 00 00 00 -- 05AC30
00 00 00 00 00 00 00 00 00 00 00 00 00 00 00 00 -- 05AC40
00 00 00 00 00 00 00 00 00 00 00 00 00 00 00 00 -- 05AC50
00 00 00 00 00 00 00 00 00 00 00 00 00 00 00 00 -- 05AC60
00 00 00 00 00 00 00 00 00 00 00 00 00 00 00 00 -- 05AC70
```

```
00 00 00 00 00 00 00 00 00 00 00 00 00 00 00 00 -- 05AC80
00 00 00 00 00 00 00 00 00 00 00 00 00 00 00 00 -- 05AC90
00 00 00 00 00 00 00 00 00 00 00 00 00 00 00 00 -- 05ACA0
00 00 00 00 00 00 00 00 00 00 00 00 00 00 00 00 -- 05ACB0
00 00 00 00 00 00 00 00 00 00 00 00 00 00 00 00 -- 05ACC0
00 00 00 00 00 00 00 00 00 00 00 00 00 00 00 00 -- 05ACD0
00 00 00 00 00 00 00 00 00 00 00 00 00 00 00 00 -- 05ACE0
00 00 00 00 00 00 00 00 00 00 00 00 00 00 00 00 -- 05ACF0
00 00 00 00 00 00 00 00 00 00 00 00 00 00 00 00 -- 05AD00
00 00 00 00 00 00 00 00 00 00 00 00 00 00 00 00 -- 05AD10
00 00 00 00 00 00 00 00 00 00 00 00 00 00 00 00 -- 05AD20
00 00 00 00 00 00 00 00 00 00 00 00 00 00 00 00 -- 05AD30
00 00 00 00 00 00 00 00 00 00 00 00 00 00 00 00 -- 05AD40
00 00 00 00 00 00 00 00 00 00 00 00 00 00 00 00 -- 05AD50
00 00 00 00 00 00 00 00 00 00 00 00 00 00 00 00 -- 05AD60
00 00 00 00 00 00 00 00 00 00 00 00 00 00 00 00 -- 05AD70
00 00 00 00 00 00 00 00 00 00 00 00 00 00 00 00 -- 05AD80
00 00 00 00 00 00 00 00 00 00 00 00 00 00 00 00 -- 05AD90

00 00 00 00 00 00 00 00 00 00 00 00 00 00 00 00 -- 05ADA0
00 00 00 00 00 00 00 00 00 00 00 00 00 00 00 00 -- 05ADB0
00 00 00 00 00 00 00 00 00 00 00 00 00 00 00 00 -- 05ADC0
00 00 00 00 00 00 00 00 00 00 00 00 00 00 00 00 -- 05ADD0
00 00 00 00 00 00 00 00 00 00 00 00 00 00 00 00 -- 05ADE0
00 00 00 00 00 00 00 00 00 00 00 00 00 00 00 00 -- 05ADF0
00 00 00 00 00 00 00 00 00 00 00 00 00 01 FE -- 05AE00
00 00 00 00 00 00 00 00 00 00 00 00 00 00 00 00 -- 05AE10
00 00 00 00 00 00 00 00 00 00 00 00 00 00 00 00 -- 05AE20
00 00 00 00 00 00 00 00 00 00 00 00 00 00 00 00 -- 05AE30
00 00 00 00 00 00 00 00 00 00 00 00 00 00 00 00 -- 05AE40
00 00 00 00 00 00 00 00 00 00 00 00 00 00 00 00 -- 05AE50
00 00 00 00 00 00 00 00 00 00 00 00 00 00 00 00 -- 05AE60
00 00 00 00 00 00 00 00 00 00 00 00 00 00 00 00 -- 05AE70
00 00 00 00 00 00 00 00 00 00 00 00 00 00 00 00 -- 05AE80
00 00 00 00 00 00 00 00 00 00 00 00 00 00 00 00 -- 05AE90
00 00 00 00 00 00 00 00 00 00 00 00 00 00 00 00 -- 05AEA0
00 00 00 00 00 00 00 00 00 00 00 00 00 00 00 00 -- 05AEB0
00 00 00 00 00 00 00 00 00 00 00 00 00 00 00 00 -- 05AEC0
00 00 00 00 00 00 00 00 00 00 00 00 00 00 00 00 -- 05AED0
00 00 00 00 00 00 00 00 00 00 00 00 00 00 00 00 -- 05AEE0
00 00 00 00 00 00 00 00 00 00 00 00 00 00 00 00 -- 05AEF0
00 00 00 00 00 00 00 00 00 00 00 00 00 00 00 00 -- 05AF00
00 00 00 00 00 00 00 00 00 00 00 00 00 00 00 00 -- 05AF10
00 00 00 00 00 00 00 00 00 00 00 00 00 00 00 00 -- 05AF20
00 00 00 00 00 00 00 00 00 00 00 00 00 00 00 00 -- 05AF30
00 00 00 00 00 00 00 00 00 00 00 00 00 00 00 00 -- 05AF40
00 00 00 00 00 00 00 00 00 00 00 00 00 00 00 00 -- 05AF50
00 00 00 00 00 00 00 00 00 00 00 00 00 00 00 00 -- 05AF60
00 00 00 00 00 00 00 00 00 00 00 00 00 00 00 00 -- 05AF70
00 00 00 00 00 00 00 00 00 00 00 00 00 00 00 00 -- 05AF80
00 00 00 00 00 00 00 00 00 00 00 00 00 00 00 00 -- 05AF90
00 00 00 00 00 00 00 00 00 00 00 00 00 00 00 00 -- 05AFA0
00 00 00 00 00 00 00 00 00 00 00 00 00 00 00 00 -- 05AFB0
00 00 00 00 00 00 00 00 00 00 00 00 00 00 00 00 -- 05AFC0
00 00 00 00 00 00 00 00 00 00 00 00 00 00 00 00 -- 05AFD0
00 00 00 00 00 00 00 00 00 00 00 00 00 00 00 00 -- 05AFE0
00 00 00 00 00 00 00 00 00 00 00 00 00 00 00 00 -- 05AFF0
00 00 00 00 00 00 00 00 00 00 00 00 00 00 01 FE -- 05B000
00 00 00 00 00 00 00 00 00 00 00 00 00 00 00 00 -- 05B010
00 00 00 00 00 00 00 00 00 00 00 00 00 00 00 00 -- 05B020
```

405

```
00  00  00  00  00  00  00  00  00  00  00  00  00  00  00  00  --  05B030
00  00  00  00  00  00  00  00  00  00  00  00  00  00  00  00  --  05B040
00  00  00  00  00  00  00  00  00  00  00  00  00  00  00  00  --  05B050
00  00  00  00  00  00  00  00  00  00  00  00  00  00  00  00  --  05B060
00  00  00  00  00  00  00  00  00  00  00  00  00  00  00  00  --  05B070
00  00  00  00  00  00  00  00  00  00  00  00  00  00  00  00  --  05B080
00  00  00  00  00  00  00  00  00  00  00  00  00  00  00  00  --  05B090
00  00  00  00  00  00  00  00  00  00  00  00  00  00  00  00  --  05B0A0
00  00  00  00  00  00  00  00  00  00  00  00  00  00  00  00  --  05B0B0
00  00  00  00  00  00  00  00  00  00  00  00  00  00  00  00  --  05B0C0
00  00  00  00  00  00  00  00  00  00  00  00  00  00  00  00  --  05B0D0
00  00  00  00  00  00  00  00  00  00  00  00  00  00  00  00  --  05B0E0
00  00  00  00  00  00  00  00  00  00  00  00  00  00  00  00  --  05B0F0
00  00  00  00  00  00  00  00  00  00  00  00  00  00  00  00  --  05B100
00  00  00  00  00  00  00  00  00  00  00  00  00  00  00  00  --  05B110
00  00  00  00  00  00  00  00  00  00  00  00  00  00  00  00  --  05B120
00  00  00  00  00  00  00  00  00  00  00  00  00  00  00  00  --  05B130

00  00  00  00  00  00  00  00  00  00  00  00  00  00  00  00  --  05B140
00  00  00  00  00  00  00  00  00  00  00  00  00  00  00  00  --  05B150
00  00  00  00  00  00  00  00  00  00  00  00  00  00  00  00  --  05B160
00  00  00  00  00  00  00  00  00  00  00  00  00  00  00  00  --  05B170
00  00  00  00  00  00  00  00  00  00  00  00  00  00  00  00  --  05B180
00  00  00  00  00  00  00  00  00  00  00  00  00  00  00  00  --  05B190
00  00  00  00  00  00  00  00  00  00  00  00  00  00  00  00  --  05B1A0
00  00  00  00  00  00  00  00  00  00  00  00  00  00  00  00  --  05B1B0
00  00  00  00  00  00  00  00  00  00  00  00  00  00  00  00  --  05B1C0
00  00  00  00  00  00  00  00  00  00  00  00  00  00  00  00  --  05B1D0
00  00  00  00  00  00  00  00  00  00  00  00  00  00  00  00  --  05B1E0
00  00  00  00  00  00  00  00  00  00  00  00  00  00  00  00  --  05B1F0
00  00  00  00  00  00  00  00  00  00  00  00  00  00  01  FE  --  05B200
00  00  00  00  00  00  00  00  00  00  00  00  00  00  00  00  --  05B210
00  00  00  00  00  00  00  00  00  00  00  00  00  00  00  00  --  05B220
00  00  00  00  00  00  00  00  00  00  00  00  00  00  00  00  --  05B230
00  00  00  00  00  00  00  00  00  00  00  00  00  00  00  00  --  05B240
00  00  00  00  00  00  00  00  00  00  00  00  00  00  00  00  --  05B250
00  00  00  00  00  00  00  00  00  00  00  00  00  00  00  00  --  05B260
00  00  00  00  00  00  00  00  00  00  00  00  00  00  00  00  --  05B270
00  00  00  00  00  00  00  00  00  00  00  00  00  00  00  00  --  05B280
00  00  00  00  00  00  00  00  00  00  00  00  00  00  00  00  --  05B290
00  00  00  00  00  00  00  00  00  00  00  00  00  00  00  00  --  05B2A0
00  00  00  00  00  00  00  00  00  00  00  00  00  00  00  00  --  05B2B0
00  00  00  00  00  00  00  00  00  00  00  00  00  00  00  00  --  05B2C0
00  00  00  00  00  00  00  00  00  00  00  00  00  00  00  00  --  05B2D0
00  00  00  00  00  00  00  00  00  00  00  00  00  00  00  00  --  05B2E0
00  00  00  00  00  00  00  00  00  00  00  00  00  00  00  00  --  05B2F0
00  00  00  00  00  00  00  00  00  00  00  00  00  00  00  00  --  05B300
00  00  00  00  00  00  00  00  00  00  00  00  00  00  00  00  --  05B310
00  00  00  00  00  00  00  00  00  00  00  00  00  00  00  00  --  05B320
00  00  00  00  00  00  00  00  00  00  00  00  00  00  00  00  --  05B330
00  00  00  00  00  00  00  00  00  00  00  00  00  00  00  00  --  05B340
00  00  00  00  00  00  00  00  00  00  00  00  00  00  00  00  --  05B350
00  00  00  00  00  00  00  00  00  00  00  00  00  00  00  00  --  05B360
00  00  00  00  00  00  00  00  00  00  00  00  00  00  00  00  --  05B370
00  00  00  00  00  00  00  00  00  00  00  00  00  00  00  00  --  05B380
00  00  00  00  00  00  00  00  00  00  00  00  00  00  00  00  --  05B390
00  00  00  00  00  00  00  00  00  00  00  00  00  00  00  00  --  05B3A0
00  00  00  00  00  00  00  00  00  00  00  00  00  00  00  00  --  05B3B0
00  00  00  00  00  00  00  00  00  00  00  00  00  00  00  00  --  05B3C0
00  00  00  00  00  00  00  00  00  00  00  00  00  00  00  00  --  05B3D0
```

```
00 00 00 00 00 00 00 00 00 00 00 00 00 00 00 00 -- 05B3E0
00 00 00 00 00 00 00 00 00 00 00 00 00 00 00 00 -- 05B3F0
00 00 00 00 00 00 00 00 00 00 00 00 00 00 01 FE -- 05B400
00 00 00 00 00 00 00 00 00 00 00 00 00 00 00 00 -- 05B410
00 00 00 00 00 00 00 00 00 00 00 00 00 00 00 00 -- 05B420
00 00 00 00 00 00 00 00 00 00 00 00 00 00 00 00 -- 05B430
00 00 00 00 00 00 00 00 00 00 00 00 00 00 00 00 -- 05B440
00 00 00 00 00 00 00 00 00 00 00 00 00 00 00 00 -- 05B450
00 00 00 00 00 00 00 00 00 00 00 00 00 00 00 00 -- 05B460
00 00 00 00 00 00 00 00 00 00 00 00 00 00 00 00 -- 05B470
00 00 00 00 00 00 00 00 00 00 00 00 00 00 00 00 -- 05B480
00 00 00 00 00 00 00 00 00 00 00 00 00 00 00 00 -- 05B490
00 00 00 00 00 00 00 00 00 00 00 00 00 00 00 00 -- 05B4A0
00 00 00 00 00 00 00 00 00 00 00 00 00 00 00 00 -- 05B4B0
00 00 00 00 00 00 00 00 00 00 00 00 00 00 00 00 -- 05B4C0
00 00 00 00 00 00 00 00 00 00 00 00 00 00 00 00 -- 05B4D0

00 00 00 00 00 00 00 00 00 00 00 00 00 00 00 00 -- 05B4E0
00 00 00 00 00 00 00 00 00 00 00 00 00 00 00 00 -- 05B4F0
00 00 00 00 00 00 00 00 00 00 00 00 00 00 00 00 -- 05B500
00 00 00 00 00 00 00 00 00 00 00 00 00 00 00 00 -- 05B510
00 00 00 00 00 00 00 00 00 00 00 00 00 00 00 00 -- 05B520
00 00 00 00 00 00 00 00 00 00 00 00 00 00 00 00 -- 05B530
00 00 00 00 00 00 00 00 00 00 00 00 00 00 00 00 -- 05B540
00 00 00 00 00 00 00 00 00 00 00 00 00 00 00 00 -- 05B550
00 00 00 00 00 00 00 00 00 00 00 00 00 00 00 00 -- 05B560
00 00 00 00 00 00 00 00 00 00 00 00 00 00 00 00 -- 05B570
00 00 00 00 00 00 00 00 00 00 00 00 00 00 00 00 -- 05B580
00 00 00 00 00 00 00 00 00 00 00 00 00 00 00 00 -- 05B590
00 00 00 00 00 00 00 00 00 00 00 00 00 00 00 00 -- 05B5A0
00 00 00 00 00 00 00 00 00 00 00 00 00 00 00 00 -- 05B5B0
00 00 00 00 00 00 00 00 00 00 00 00 00 00 00 00 -- 05B5C0
00 00 00 00 00 00 00 00 00 00 00 00 00 00 00 00 -- 05B5D0
00 00 00 00 00 00 00 00 00 00 00 00 00 00 00 00 -- 05B5E0
00 00 00 00 00 00 00 00 00 00 00 00 00 00 00 00 -- 05B5F0
00 00 00 00 00 00 00 00 00 00 00 00 00 00 01 FE -- 05B600
00 00 00 00 00 00 00 00 00 00 00 00 00 00 00 00 -- 05B610
00 00 00 00 00 00 00 00 00 00 00 00 00 00 00 00 -- 05B620
00 00 00 00 00 00 00 00 00 00 00 00 00 00 00 00 -- 05B630
00 00 00 00 00 00 00 00 00 00 00 00 00 00 00 00 -- 05B640
00 00 00 00 00 00 00 00 00 00 00 00 00 00 00 00 -- 05B650
00 00 00 00 00 00 00 00 00 00 00 00 00 00 00 00 -- 05B660
00 00 00 00 00 00 00 00 00 00 00 00 00 00 00 00 -- 05B670
00 00 00 00 00 00 00 00 00 00 00 00 00 00 00 00 -- 05B680
00 00 00 00 00 00 00 00 00 00 00 00 00 00 00 00 -- 05B690
00 00 00 00 00 00 00 00 00 00 00 00 00 00 00 00 -- 05B6A0
00 00 00 00 00 00 00 00 00 00 00 00 00 00 00 00 -- 05B6B0
00 00 00 00 00 00 00 00 00 00 00 00 00 00 00 00 -- 05B6C0
00 00 00 00 00 00 00 00 00 00 00 00 00 00 00 00 -- 05B6D0
00 00 00 00 00 00 00 00 00 00 00 00 00 00 00 00 -- 05B6E0
00 00 00 00 00 00 00 00 00 00 00 00 00 00 00 00 -- 05B6F0
70 75 00 64 6E 65 70 73 75 73 00 00 00 00 00 00 -- 05B700
65 6D 75 73 65 72 00 62 61 64 70 75 00 62 61 64 -- 05B710
4F 43 54 52 41 54 53 00 59 41 4C 50 53 49 44 00 -- 05B720
52 43 53 00 44 41 52 47 54 52 41 54 53 00 59 50 -- 05B730
54 41 52 43 53 4C 45 43 4E 41 43 00 48 43 54 41 -- 05B740
41 43 00 54 49 4C 50 53 54 52 41 54 53 00 48 43 -- 05B750
41 52 43 53 45 52 00 54 49 4C 50 53 4C 45 43 4E -- 05B760
20 0A 0A 0A 00 48 53 45 52 46 45 52 00 48 43 54 -- 05B770
66 49 20 20 20 20 20 20 20 67 6E 69 74 69 75 51 -- 05B780
```

407

```
2E 68 73 75 72 42 20 72 69 41 20 6D 6F 6F 5A 20 -- 05B790
45 56 41 53 20 00 20 45 54 41 44 50 55 20 00 0A -- 05B7A0
41 42 20 00 00 53 45 47 4E 41 48 43 20 20 20 20 -- 05B7B0
55 20 00 20 44 41 50 59 45 4B 20 4F 54 20 4B 43 -- 05B7C0
20 20 20 20 45 56 41 53 20 00 20 45 54 41 44 50 -- 05B7D0
54 20 4B 43 41 42 20 00 00 53 45 47 4E 41 48 43 -- 05B7E0
4E 20 49 20 46 0A 00 20 44 41 50 59 45 4B 20 4F -- 05B7F0
4C 55 47 45 52 20 20 20 48 20 53 20 49 20 01 FE -- 05B800
53 20 45 20 53 20 20 20 42 41 44 50 55 20 52 41 -- 05B810
0A 00 0A 21 21 21 20 4E 20 4F 20 49 20 53 20 -- 05B820
52 54 20 20 20 48 20 53 20 49 20 4E 20 49 20 46 -- 05B830
20 42 41 44 50 55 20 54 4E 45 52 41 50 53 4E 41 -- 05B840
20 4E 20 4F 20 49 20 53 20 53 20 45 20 53 20 20 -- 05B850
00 00 00 00 00 00 00 00 00 00 00 0A 21 21 21 21 -- 05B860
00 00 00 00 00 00 00 00 FF FF 00 00 00 00 00 00 -- 05B870

00 00 00 00 00 00 00 00 00 00 00 00 00 05 00 00 -- 05B880
00 00 00 00 00 00 00 00 00 00 00 00 00 00 00 00 -- 05B890
00 00 00 00 00 00 00 00 00 00 00 00 00 00 00 00 -- 05B8A0
00 00 00 00 00 00 00 00 00 00 00 00 00 00 00 00 -- 05B8B0
00 00 00 00 00 00 00 00 00 00 00 00 00 00 00 00 -- 05B8C0
00 00 00 00 00 00 00 00 00 00 00 00 00 00 00 00 -- 05B8D0
00 00 00 00 00 00 00 00 00 00 00 00 00 00 00 00 -- 05B8E0
00 00 00 00 00 00 00 00 00 00 00 00 00 00 00 00 -- 05B8F0
00 00 00 00 00 00 00 00 00 00 00 00 00 00 00 00 -- 05B900
00 00 00 00 00 00 00 00 00 00 00 00 00 00 00 00 -- 05B910
00 00 00 00 00 00 00 00 00 00 00 00 00 00 00 00 -- 05B920
00 00 00 00 00 00 00 00 00 00 00 00 00 00 00 00 -- 05B930
00 00 00 00 00 00 00 00 00 00 00 00 00 00 00 00 -- 05B940
00 00 00 00 00 00 00 00 00 00 00 00 00 00 00 00 -- 05B950
00 00 00 00 00 00 00 00 00 00 00 00 00 00 00 00 -- 05B960
00 00 00 00 00 00 00 00 00 00 00 00 00 00 00 00 -- 05B970
00 00 00 00 00 00 00 00 00 00 00 00 00 00 00 00 -- 05B980
00 00 00 00 00 00 00 00 00 00 00 00 00 00 00 00 -- 05B990
00 00 00 00 00 00 00 00 00 00 00 00 00 00 00 00 -- 05B9A0
00 00 00 00 00 00 00 00 00 00 00 00 00 00 00 00 -- 05B9B0
00 00 00 00 00 00 00 00 00 00 00 00 00 00 00 00 -- 05B9C0
00 00 00 00 00 00 00 00 00 00 00 00 00 00 00 00 -- 05B9D0
00 00 00 00 00 00 00 00 00 00 00 00 00 00 00 00 -- 05B9E0
00 00 00 00 00 00 00 00 00 00 00 00 00 00 00 00 -- 05B9F0
00 00 00 00 00 00 00 00 00 00 00 00 00 00 01 FE -- 05BA00
00 00 00 00 00 00 00 00 00 00 00 00 00 00 00 00 -- 05BA10
00 00 00 00 00 00 00 00 00 00 00 00 00 00 00 00 -- 05BA20
00 00 00 00 00 00 00 00 00 00 00 00 00 00 00 00 -- 05BA30
00 00 00 00 00 00 00 00 00 00 00 00 00 00 00 00 -- 05BA40
00 00 00 00 00 00 00 00 00 00 00 00 00 00 00 00 -- 05BA50
00 00 00 00 00 00 00 00 00 00 00 00 00 00 00 00 -- 05BA60
00 00 00 00 00 00 00 00 00 00 00 00 00 00 00 00 -- 05BA70
00 00 00 00 00 00 00 00 00 00 00 00 00 00 00 00 -- 05BA80
00 00 00 00 00 00 00 00 00 00 00 00 00 00 00 00 -- 05BA90
00 00 00 00 00 00 00 00 00 00 00 00 00 00 00 00 -- 05BAA0
00 00 00 00 00 00 00 00 00 00 00 00 00 00 00 00 -- 05BAB0
00 00 00 00 00 00 00 00 00 00 00 00 00 00 00 00 -- 05BAC0
00 C0 00 00 00 00 00 00 00 00 00 00 00 00 00 00 -- 05BAD0
00 00 00 00 00 00 00 00 00 00 00 00 00 00 00 00 -- 05BAE0
00 00 00 00 00 00 00 00 00 00 00 00 00 00 00 00 -- 05BAF0
00 00 00 00 00 00 00 00 00 00 00 00 00 00 00 00 -- 05BB00
00 00 00 00 00 00 00 00 00 00 00 00 00 00 00 00 -- 05BB10
00 00 00 00 00 00 00 00 00 00 00 00 00 00 00 00 -- 05BB20
00 00 00 00 00 00 00 00 00 00 00 00 00 00 00 00 -- 05BB30
```

408

```
00 00 00 00 00 00 00 00 00 00 00 00 00 00 00 00 -- 05BB40
00 00 00 00 00 00 00 00 00 00 00 00 00 00 00 00 -- 05BB50
00 00 00 00 00 00 00 00 00 00 00 00 00 00 00 00 -- 05BB60
00 00 00 00 00 00 00 00 00 00 00 00 00 00 00 00 -- 05BB70
00 00 00 00 00 00 00 00 00 00 00 00 00 00 00 00 -- 05BB80
00 00 00 00 00 00 00 00 00 00 00 00 00 00 00 00 -- 05BB90
00 00 00 00 00 00 00 00 00 00 00 00 00 00 00 00 -- 05BBA0
00 00 00 00 00 00 00 00 00 00 00 00 00 00 00 00 -- 05BBB0
00 00 00 00 00 00 00 00 00 00 00 00 00 00 00 00 -- 05BBC0
00 00 00 00 00 00 00 00 00 00 00 00 00 00 00 00 -- 05BBD0
00 00 00 00 00 00 00 00 00 00 00 00 00 00 00 00 -- 05BBE0
00 00 00 00 00 00 00 00 00 00 00 00 00 00 00 00 -- 05BBF0
00 00 00 00 00 00 00 00 00 00 00 00 00 00 01 FE -- 05BC00
00 00 00 00 00 00 00 00 00 00 00 00 00 00 00 00 -- 05BC10

00 00 00 00 00 00 00 00 00 00 00 00 00 00 00 00 -- 05BC20
00 00 00 00 00 00 00 00 00 00 00 00 00 00 00 00 -- 05BC30
00 00 00 00 00 00 00 00 00 00 00 00 00 00 00 00 -- 05BC40
00 00 00 00 00 00 00 00 00 00 00 00 00 00 00 00 -- 05BC50
00 00 00 00 00 00 00 00 00 00 00 00 00 00 00 00 -- 05BC60
00 00 00 00 00 00 00 00 00 00 00 00 00 00 00 00 -- 05BC70
00 00 00 00 00 00 00 00 00 00 00 00 00 00 00 00 -- 05BC80
00 00 00 00 00 00 00 00 00 00 00 00 00 00 00 00 -- 05BC90
00 00 00 00 00 00 00 00 00 00 00 00 00 00 00 00 -- 05BCA0
00 00 00 00 00 00 00 00 00 00 00 00 00 00 00 00 -- 05BCB0
00 00 00 00 00 00 00 00 00 00 00 00 00 00 00 00 -- 05BCC0
00 00 00 00 00 00 00 00 00 00 00 00 00 00 00 00 -- 05BCD0
00 00 00 00 00 00 00 00 00 00 00 00 00 00 00 00 -- 05BCE0
00 00 00 00 00 00 00 00 00 00 00 00 00 00 00 00 -- 05BCF0
00 00 00 00 00 00 00 00 00 00 00 00 00 00 00 00 -- 05BD00
00 00 00 00 00 00 00 00 00 00 00 00 00 00 00 00 -- 05BD10
00 00 00 00 00 00 00 00 00 00 00 00 00 00 00 00 -- 05BD20
00 00 00 00 00 00 00 00 00 00 00 00 00 00 00 00 -- 05BD30
00 00 00 00 00 00 00 00 00 00 00 00 00 00 00 00 -- 05BD40
00 00 00 00 00 00 00 00 00 00 00 00 00 00 00 00 -- 05BD50
00 00 00 00 00 00 00 00 00 00 00 00 00 00 00 00 -- 05BD60
00 00 00 00 00 00 00 00 00 00 00 00 00 00 00 00 -- 05BD70
00 00 00 00 00 00 00 00 00 00 00 00 00 00 00 00 -- 05BD80
00 00 00 00 00 00 00 00 00 00 00 00 00 00 00 00 -- 05BD90
00 00 00 00 00 00 00 00 00 00 00 00 00 00 00 00 -- 05BDA0
00 00 00 00 00 00 00 00 00 00 00 00 00 00 00 00 -- 05BDB0
00 00 00 00 00 00 00 00 00 00 00 00 00 00 00 00 -- 05BDC0
00 00 00 00 00 00 00 00 00 00 00 00 00 00 00 00 -- 05BDD0
00 00 00 00 00 00 00 00 00 00 00 00 00 00 00 00 -- 05BDE0
00 00 00 00 00 00 00 00 00 00 00 00 00 00 00 00 -- 05BDF0
00 00 00 00 00 00 00 00 00 00 00 00 00 00 01 FE -- 05BE00
00 00 00 00 00 00 00 00 00 00 00 00 00 00 00 00 -- 05BE10
00 00 00 00 00 00 00 00 00 00 00 00 00 00 00 00 -- 05BE20
00 00 00 00 00 00 00 00 00 00 00 00 00 00 00 00 -- 05BE30
00 00 00 00 00 00 00 00 00 00 00 00 00 00 00 00 -- 05BE40
00 00 00 00 00 00 00 00 00 00 00 00 00 00 00 00 -- 05BE50
00 00 00 00 00 00 00 00 00 00 00 00 00 00 00 00 -- 05BE60
00 00 00 00 00 00 00 00 00 00 00 00 00 00 00 00 -- 05BE70
00 00 00 00 00 00 00 00 00 00 00 00 00 00 00 00 -- 05BE80
00 00 00 00 00 00 00 00 00 00 00 00 00 00 00 00 -- 05BE90
00 00 00 00 00 00 00 00 00 00 00 00 00 00 00 00 -- 05BEA0
00 00 00 00 00 00 00 00 00 00 00 00 00 00 00 00 -- 05BEB0
00 00 00 00 00 00 00 00 00 00 00 00 00 00 00 00 -- 05BEC0
00 00 00 00 00 00 00 00 00 00 00 00 00 00 00 00 -- 05BED0
00 00 00 00 00 00 00 00 00 00 00 00 00 00 00 00 -- 05BEE0
```

```
00 00 00 00 00 00 00 00 00 00 00 00 00 00 00 00 -- 05BEF0
00 00 00 00 00 00 00 00 00 00 00 00 00 00 00 00 -- 05BF00
00 00 00 00 00 00 00 00 00 00 00 00 00 00 00 00 -- 05BF10
00 00 00 00 00 00 00 00 00 00 00 00 00 00 00 00 -- 05BF20
00 00 00 00 00 00 00 00 00 00 00 00 00 00 00 00 -- 05BF30
00 00 00 00 00 00 00 00 00 00 00 00 00 00 00 00 -- 05BF40
00 00 00 00 00 00 00 00 00 00 00 00 00 00 00 00 -- 05BF50
00 00 00 00 00 00 00 00 00 00 00 00 00 00 00 00 -- 05BF60
00 00 00 00 00 00 00 00 00 00 00 00 00 00 00 00 -- 05BF70
00 00 00 00 00 00 00 00 00 00 00 00 00 00 00 00 -- 05BF80
00 00 00 00 00 00 00 00 00 00 00 00 00 00 00 00 -- 05BF90
00 00 00 00 00 00 00 00 00 00 00 00 00 00 00 00 -- 05BFA0
00 00 00 00 00 00 00 00 00 00 00 00 00 00 00 00 -- 05BFB0

00 00 00 00 00 00 00 00 00 00 00 00 00 00 00 00 -- 05BFC0
00 00 00 00 00 00 00 00 00 00 00 00 00 00 00 00 -- 05BFD0
00 00 00 00 00 00 00 00 00 00 00 00 00 00 00 00 -- 05BFE0
00 00 00 00 00 00 00 00 00 00 00 00 00 00 00 00 -- 05BFF0
00 00 00 00 00 00 00 00 00 00 00 00 00 00 01 FE -- 05C000
00 00 00 00 00 00 00 00 00 00 00 00 00 00 00 00 -- 05C010
00 00 00 00 00 00 00 00 00 00 00 00 00 00 00 01 -- 05C020
00 00 00 00 00 00 00 00 00 00 00 00 00 00 00 00 -- 05C030
00 00 00 00 00 00 00 00 00 00 00 00 00 00 00 00 -- 05C040
00 00 00 00 00 00 00 00 00 00 00 00 00 00 00 00 -- 05C050
00 00 00 00 00 00 00 00 00 00 00 00 00 00 00 00 -- 05C060
00 00 00 00 00 00 00 00 00 00 00 00 00 00 00 00 -- 05C070
00 00 00 00 00 00 00 00 00 00 00 00 00 00 00 00 -- 05C080
00 00 00 00 00 00 00 00 00 00 00 00 00 00 00 00 -- 05C090
00 00 00 00 00 00 00 00 00 00 00 00 00 00 00 00 -- 05C0A0
00 00 00 00 00 00 00 00 00 00 00 00 00 00 00 00 -- 05C0B0
00 00 00 00 00 00 00 00 00 00 00 00 00 00 00 00 -- 05C0C0
00 00 00 00 00 00 00 00 00 00 00 00 00 00 00 00 -- 05C0D0
00 00 00 00 00 00 00 00 00 00 00 00 00 00 00 00 -- 05C0E0
00 00 00 00 00 00 00 00 00 00 00 00 00 00 00 00 -- 05C0F0
00 00 00 00 00 00 00 00 00 00 00 00 00 00 00 00 -- 05C100
00 00 00 00 00 00 00 00 00 00 00 00 00 00 00 00 -- 05C110
00 00 00 00 00 00 00 00 00 00 00 00 00 00 00 00 -- 05C120
00 00 00 00 00 00 00 00 00 00 00 00 00 00 00 00 -- 05C130
00 00 00 00 00 00 00 00 00 00 00 00 00 00 00 00 -- 05C140
00 00 00 00 00 00 00 00 00 00 00 00 00 00 00 00 -- 05C150
00 00 00 00 00 00 00 00 00 00 00 00 00 00 00 00 -- 05C160
00 00 00 00 00 00 00 00 00 00 00 00 00 00 00 00 -- 05C170
00 00 00 00 00 00 00 00 00 00 00 00 00 00 00 00 -- 05C180
00 00 00 00 00 00 00 00 00 00 00 00 00 00 00 00 -- 05C190
00 00 00 00 00 00 00 00 00 00 00 00 00 00 00 00 -- 05C1A0
00 00 00 00 00 00 00 00 00 00 00 00 00 00 00 00 -- 05C1B0
00 00 00 00 00 00 00 00 00 00 00 00 00 00 00 00 -- 05C1C0
00 00 00 00 00 00 00 00 00 00 00 00 00 00 00 00 -- 05C1D0
00 00 00 00 00 00 00 00 00 00 00 00 00 00 00 00 -- 05C1E0
00 00 00 00 00 00 00 00 00 00 00 00 00 00 00 00 -- 05C1F0
00 00 00 00 00 00 00 00 00 00 00 00 00 00 01 FE -- 05C200
00 00 00 00 00 00 00 00 00 00 00 00 00 00 00 00 -- 05C210
00 00 00 00 00 00 00 00 00 00 00 00 00 00 00 00 -- 05C220
00 00 00 00 00 00 00 00 00 00 00 00 00 00 00 00 -- 05C230
00 00 00 00 00 00 00 00 00 00 00 00 00 00 00 00 -- 05C240
00 00 00 00 00 00 00 00 00 00 00 00 00 00 00 00 -- 05C250
00 00 00 00 00 00 00 00 00 00 00 00 00 00 00 00 -- 05C260
00 00 00 00 00 00 00 00 00 00 00 00 00 00 00 00 -- 05C270
00 00 00 00 00 00 00 00 00 00 00 00 00 00 00 00 -- 05C280
00 00 00 00 00 00 00 00 00 00 00 00 00 00 00 00 -- 05C290
```

```
00  00  00  00  00  00  00  00  00  00  00  00  00  00  00  00  --  05C2A0
00  00  00  00  00  00  00  00  00  00  00  00  00  00  00  00  --  05C2B0
00  00  00  00  00  00  00  00  00  00  00  00  00  00  00  00  --  05C2C0
00  00  00  00  00  00  00  00  00  00  00  00  00  00  00  00  --  05C2D0
00  00  00  00  00  00  00  00  00  00  00  00  00  00  00  00  --  05C2E0
00  00  00  00  00  00  00  00  00  00  00  00  00  00  00  00  --  05C2F0
00  00  00  00  00  00  00  00  00  00  00  00  00  00  00  00  --  05C300
00  00  00  00  00  00  00  00  00  00  00  00  00  00  00  00  --  05C310
00  00  00  00  00  00  00  00  00  00  00  00  00  00  00  00  --  05C320
00  00  00  00  00  00  00  00  00  00  00  00  00  00  00  00  --  05C330
00  00  00  00  00  00  00  00  00  00  00  00  00  00  00  00  --  05C340
00  00  00  00  00  00  00  00  00  00  00  00  00  00  00  00  --  05C350

00  00  00  00  00  00  00  00  00  00  00  00  00  00  00  00  --  05C360
00  00  00  00  00  00  00  00  00  00  00  00  00  00  00  00  --  05C370
00  00  00  00  00  00  00  00  00  00  00  00  00  00  00  00  --  05C380
00  00  00  00  00  00  00  00  00  00  00  00  00  00  00  00  --  05C390
00  00  00  00  00  00  00  00  00  00  00  00  00  00  00  00  --  05C3A0
00  00  00  00  00  00  00  00  00  00  00  00  00  00  00  00  --  05C3B0
00  00  00  00  00  00  00  00  00  00  00  00  00  00  00  00  --  05C3C0
00  00  00  00  00  00  00  00  00  00  00  00  00  00  00  00  --  05C3D0
00  00  00  00  00  00  00  00  00  00  00  00  00  00  00  00  --  05C3E0
00  00  00  00  00  00  00  00  00  00  00  00  00  00  00  00  --  05C3F0
00  00  00  00  00  00  00  00  00  00  00  00  00  00  01  FE  --  05C400
00  00  00  00  00  00  00  00  00  00  00  00  00  00  00  00  --  05C410
00  00  00  00  00  00  00  00  00  00  00  00  00  00  00  00  --  05C420
00  00  00  00  00  00  00  00  00  00  00  00  00  00  00  00  --  05C430
00  00  00  00  00  00  00  00  00  00  00  00  00  00  00  00  --  05C440
00  00  00  00  00  00  00  00  00  00  00  00  00  00  00  00  --  05C450
00  00  00  00  00  00  00  00  00  00  00  00  00  00  00  00  --  05C460
00  00  00  00  00  00  00  00  00  00  00  00  00  00  00  00  --  05C470
00  00  00  00  00  00  00  00  00  00  00  00  00  00  00  00  --  05C480
00  00  00  00  00  00  00  00  00  00  00  00  00  00  00  00  --  05C490
00  00  00  00  00  00  00  00  00  00  00  00  00  00  00  00  --  05C4A0
00  00  00  00  00  00  00  00  00  00  00  00  00  00  00  00  --  05C4B0
00  00  00  00  00  00  00  00  00  00  00  00  00  00  00  00  --  05C4C0
00  00  00  00  00  00  00  00  00  00  00  00  00  00  00  00  --  05C4D0
00  00  00  00  00  00  00  00  00  00  00  00  00  00  00  00  --  05C4E0
00  00  00  00  00  00  00  00  00  00  00  00  00  00  00  00  --  05C4F0
00  00  00  00  00  00  00  00  00  00  00  00  00  00  00  00  --  05C500
00  00  00  00  00  00  00  00  00  00  00  00  00  00  00  00  --  05C510
00  00  00  00  00  00  00  00  00  00  00  00  00  00  00  00  --  05C520
00  00  00  00  00  00  00  00  00  00  00  00  00  00  00  00  --  05C530
00  00  00  00  00  00  00  00  00  00  00  00  00  00  00  00  --  05C540
00  00  00  00  00  00  00  00  00  00  00  00  00  00  00  00  --  05C550
00  00  00  00  00  00  00  00  00  00  00  00  00  00  00  00  --  05C560
00  00  00  00  00  00  00  00  00  00  00  00  00  00  00  00  --  05C570
00  00  00  00  00  00  00  00  00  00  00  00  00  00  00  00  --  05C580
00  00  00  00  00  00  00  00  00  00  00  00  00  00  00  00  --  05C590
00  00  00  00  00  00  00  00  00  00  00  00  00  00  00  00  --  05C5A0
00  00  00  00  00  00  00  00  00  00  00  00  00  00  00  00  --  05C5B0
00  00  00  00  00  00  00  00  00  00  00  00  00  00  00  00  --  05C5C0
00  00  00  00  00  00  00  00  00  00  00  00  00  00  00  00  --  05C5D0
00  00  00  00  00  00  00  00  00  00  00  00  00  00  00  00  --  05C5E0
00  00  00  00  00  00  00  00  00  00  00  00  00  00  00  00  --  05C5F0
00  00  00  00  00  00  00  00  00  00  00  00  00  00  01  FE  --  05C600
00  00  00  00  00  00  00  00  00  00  00  00  00  00  00  00  --  05C610
00  00  00  00  00  00  00  00  00  00  00  00  00  00  00  00  --  05C620
00  00  00  00  00  00  00  00  00  00  00  00  00  00  00  00  --  05C630
00  00  00  00  00  00  00  00  00  00  00  00  00  00  00  00  --  05C640
```

411

```
00  00  00  00  00  00  00  00  00  00  00  00  00  00  00  00  --  05C650
00  00  00  00  00  00  00  00  00  00  00  00  00  00  00  00  --  05C660
00  00  00  00  00  00  00  00  00  00  00  00  00  00  00  00  --  05C670
00  00  00  00  00  00  00  00  00  00  00  00  00  00  00  00  --  05C680
00  00  00  00  00  00  00  00  00  00  00  00  00  00  00  00  --  05C690
00  00  00  00  00  00  00  00  00  00  00  00  00  00  00  00  --  05C6A0
00  00  00  00  00  00  00  00  00  00  00  00  00  00  00  00  --  05C6B0
00  00  00  00  00  00  00  00  00  00  00  00  00  00  00  00  --  05C6C0
00  00  00  00  00  00  00  00  00  00  00  00  00  00  00  00  --  05C6D0
00  00  00  00  00  00  00  00  00  00  00  00  00  00  00  00  --  05C6E0
00  00  00  00  00  00  00  00  00  00  00  00  00  00  00  00  --  05C6F0

00  00  00  00  00  00  00  00  00  00  00  00  00  00  00  00  --  05C700
00  00  00  00  00  00  00  00  00  00  00  00  00  00  00  00  --  05C710
00  00  00  00  00  00  00  00  00  00  00  00  00  00  00  00  --  05C720
00  00  00  00  00  00  00  00  00  00  00  00  00  00  00  00  --  05C730
00  00  00  00  00  00  00  00  00  00  00  00  00  00  00  00  --  05C740
00  00  00  00  00  00  00  00  00  00  00  00  00  00  00  00  --  05C750
00  00  00  00  00  00  00  00  00  00  00  00  00  00  00  00  --  05C760
00  00  00  00  00  00  00  00  00  00  00  00  00  00  00  00  --  05C770
00  00  00  00  00  00  00  00  00  00  00  00  00  00  00  00  --  05C780
00  00  00  00  00  00  00  00  00  00  00  00  00  00  00  00  --  05C790
00  00  00  00  00  00  00  00  00  00  00  00  00  00  00  00  --  05C7A0
00  00  00  00  00  00  00  00  00  00  00  00  00  00  00  00  --  05C7B0
00  00  00  00  00  00  00  00  00  00  00  00  00  00  00  00  --  05C7C0
00  00  00  00  00  00  00  00  00  00  00  00  00  00  00  00  --  05C7D0
00  00  00  00  00  00  00  00  00  00  00  00  00  00  00  00  --  05C7E0
00  00  00  00  00  00  00  00  00  00  00  00  00  00  00  00  --  05C7F0
00  00  00  00  00  00  00  00  00  00  00  00  00  00  01  FE  --  05C800
00  00  00  00  00  00  00  00  00  00  00  00  00  00  00  00  --  05C810
00  00  00  00  00  00  00  00  00  00  00  00  00  00  00  00  --  05C820
00  00  00  00  00  00  00  00  00  00  00  00  00  00  00  00  --  05C830
00  00  00  00  00  00  00  00  00  00  00  00  00  00  00  00  --  05C840
00  00  00  00  00  00  00  00  00  00  00  00  00  00  00  00  --  05C850
FF  F6  FF  FF  00  64  00  0A  00  01  00  00  00  00  00  00  --  05C860
D7  0A  3F  80  00  00  3D  CC  CC  CC  3C  23  D7  0A  FF  9C  --  05C870
00  00  00  00  00  00  BF  80  00  00  BD  CC  CC  CC  BC  23  --  05C880
00  00  00  00  00  00  00  00  00  00  00  00  00  00  00  00  --  05C890
00  00  00  00  00  00  00  00  00  00  00  00  00  00  00  00  --  05C8A0
00  00  00  00  00  00  00  00  00  00  00  00  00  00  00  00  --  05C8B0
00  00  00  00  00  00  00  00  00  00  00  00  00  00  00  00  --  05C8C0
00  00  00  00  00  00  00  00  00  00  00  00  00  00  00  00  --  05C8D0
00  00  00  00  00  00  00  00  00  00  00  00  00  00  00  00  --  05C8E0
00  00  00  00  00  00  00  00  00  00  00  00  00  00  00  00  --  05C8F0
00  00  00  00  00  00  00  00  00  00  00  00  00  00  00  00  --  05C900
00  00  00  00  00  00  00  00  00  00  00  00  00  00  00  00  --  05C910
00  00  00  00  00  00  00  00  00  00  00  00  00  00  00  00  --  05C920
00  00  00  00  00  00  00  00  00  00  00  00  00  00  00  00  --  05C930
00  00  00  00  00  00  00  00  00  00  00  00  00  00  00  00  --  05C940
00  00  00  00  00  00  00  00  00  00  00  00  00  00  00  00  --  05C950
00  00  00  00  00  00  00  00  00  00  00  00  00  00  00  00  --  05C960
00  00  00  00  00  00  00  00  00  00  00  00  00  00  00  00  --  05C970
00  00  00  00  00  00  00  00  00  00  00  00  00  00  00  00  --  05C980
00  00  00  00  00  00  00  00  00  00  00  00  00  00  00  00  --  05C990
00  00  00  00  00  00  00  00  00  00  00  00  00  00  00  00  --  05C9A0
00  00  00  00  00  00  00  00  00  00  00  00  00  00  00  00  --  05C9B0
00  00  00  00  00  00  00  00  00  00  00  00  00  00  00  00  --  05C9C0
00  00  00  00  00  00  00  00  00  00  00  00  00  00  00  00  --  05C9D0
00  00  00  00  00  00  00  00  00  00  00  00  00  00  00  00  --  05C9E0
00  00  00  00  00  00  00  00  00  00  00  00  00  00  00  00  --  05C9F0
```

```
00 00 00 00 00 00 00 00 00 00 00 00 00 00 01 FE  -- 05CA00
00 00 00 00 00 00 00 00 00 00 00 00 00 00 00 00  -- 05CA10
00 00 00 00 00 00 00 00 00 00 00 00 00 00 00 00  -- 05CA20
00 00 00 00 00 00 00 00 00 00 00 00 00 00 00 00  -- 05CA30
00 00 00 00 00 00 00 00 00 00 00 00 00 00 00 00  -- 05CA40
00 00 00 00 00 00 00 00 00 00 00 00 00 00 00 00  -- 05CA50
00 00 00 00 00 00 00 00 00 00 00 00 00 00 00 00  -- 05CA60
00 00 00 00 00 00 00 00 00 00 00 00 00 00 00 00  -- 05CA70
00 00 00 00 00 00 00 00 00 00 00 00 00 00 00 00  -- 05CA80
00 00 00 00 00 00 00 00 00 00 00 00 00 00 00 00  -- 05CA90

00 00 00 00 00 00 00 00 00 00 00 00 00 00 00 00  -- 05CAA0
00 00 00 00 00 00 00 00 00 00 00 00 00 00 00 00  -- 05CAB0
00 00 00 00 00 00 00 00 00 00 00 00 00 00 00 00  -- 05CAC0
00 00 00 00 00 00 00 00 00 00 00 00 00 00 00 00  -- 05CAD0
00 00 00 00 00 00 00 00 00 00 00 00 00 00 00 00  -- 05CAE0
00 00 00 00 00 00 00 00 00 00 00 00 00 00 00 00  -- 05CAF0
00 00 00 00 00 00 00 00 00 00 00 00 00 00 00 00  -- 05CB00
00 00 00 00 00 00 00 00 00 00 00 00 00 00 00 00  -- 05CB10
00 00 00 00 00 00 00 00 00 00 00 00 00 00 00 00  -- 05CB20
00 00 00 00 00 00 00 00 00 00 00 00 00 00 00 00  -- 05CB30
00 00 00 00 00 00 00 00 00 00 00 00 00 00 00 00  -- 05CB40
00 00 00 00 00 00 00 00 00 00 00 00 00 00 00 00  -- 05CB50
00 00 00 00 00 00 00 00 00 00 00 00 00 00 00 00  -- 05CB60
00 00 00 00 00 00 00 00 00 00 00 00 00 00 00 00  -- 05CB70
00 00 00 00 00 00 00 00 00 00 00 00 00 00 00 00  -- 05CB80
00 00 00 00 00 00 00 00 00 00 00 00 00 00 00 00  -- 05CB90
00 00 00 00 00 00 00 00 00 00 00 00 00 00 00 00  -- 05CBA0
00 00 00 00 00 00 00 00 00 00 00 00 00 00 00 00  -- 05CBB0
00 00 00 00 00 00 00 00 00 00 00 00 00 00 00 00  -- 05CBC0
00 00 00 00 00 00 00 00 00 00 00 00 00 00 00 00  -- 05CBD0
00 00 00 00 00 00 00 00 00 00 00 00 00 00 00 00  -- 05CBE0
00 00 00 00 00 00 00 00 00 00 00 00 00 00 00 00  -- 05CBF0
00 00 00 00 00 00 00 00 00 00 00 00 00 00 01 FE  -- 05CC00
00 00 00 00 00 00 00 00 00 00 00 00 00 00 00 00  -- 05CC10
00 00 00 00 00 00 00 00 00 00 00 00 00 00 00 00  -- 05CC20
00 00 00 00 00 00 00 00 00 00 00 00 00 00 00 00  -- 05CC30
00 00 00 00 00 00 00 00 00 00 00 00 00 00 00 00  -- 05CC40
00 00 00 00 00 00 00 00 00 00 00 00 00 00 00 00  -- 05CC50
00 00 00 00 00 00 00 00 00 00 00 00 00 00 00 00  -- 05CC60
00 00 00 00 00 00 00 00 00 00 00 00 00 00 00 00  -- 05CC70
00 00 00 00 00 00 00 00 00 00 00 00 00 00 00 00  -- 05CC80
00 00 00 00 00 00 00 00 00 00 00 00 00 00 00 00  -- 05CC90
00 00 00 00 00 00 00 00 00 00 00 00 00 00 00 00  -- 05CCA0
00 00 00 00 00 00 00 00 00 00 00 00 00 00 00 00  -- 05CCB0
00 00 00 00 00 00 00 00 00 00 00 00 00 00 00 00  -- 05CCC0
00 00 00 00 00 00 00 00 00 00 00 00 00 00 00 00  -- 05CCD0
00 00 00 00 00 00 00 00 00 00 00 00 00 00 00 00  -- 05CCE0
00 00 00 00 00 00 00 00 00 00 00 00 00 00 00 00  -- 05CCF0
00 00 00 00 00 00 00 00 00 00 00 00 00 00 00 00  -- 05CD00
00 00 00 00 00 00 00 00 00 00 00 00 00 00 00 00  -- 05CD10
00 00 00 00 00 00 00 00 00 00 00 00 00 00 00 00  -- 05CD20
00 00 00 00 00 00 00 00 00 00 00 00 00 00 00 00  -- 05CD30
00 00 00 00 00 00 00 00 00 00 00 00 00 00 00 00  -- 05CD40
00 00 00 00 00 00 00 00 00 00 00 00 00 00 00 00  -- 05CD50
00 00 00 00 00 00 00 00 00 00 00 00 00 00 00 00  -- 05CD60
00 00 00 00 00 00 00 00 00 00 00 00 00 00 00 00  -- 05CD70
00 00 00 00 00 00 00 00 00 00 00 00 00 00 00 00  -- 05CD80
00 00 00 00 00 00 00 00 00 00 00 00 00 00 00 00  -- 05CD90
00 00 00 00 00 00 00 00 00 00 00 00 00 00 00 00  -- 05CDA0
```

```
00 00 00 00 00 00 00 00 00 00 00 00 00 00 00 00 -- 05CDB0
00 00 00 00 00 00 00 00 00 00 00 00 00 00 00 00 -- 05CDC0
00 00 00 00 00 00 00 00 00 00 00 00 00 00 00 00 -- 05CDD0
00 00 00 00 00 00 00 00 00 00 00 00 00 00 00 00 -- 05CDE0
00 00 00 00 00 00 00 00 00 00 00 00 00 00 00 00 -- 05CDF0
00 00 00 00 00 00 00 00 00 00 00 00 00 00 01 FE -- 05CE00
00 00 00 00 00 00 00 00 00 00 00 00 00 00 00 00 -- 05CE10
00 00 00 00 00 00 00 00 00 00 00 00 00 00 00 00 -- 05CE20
00 00 00 00 00 00 00 00 00 00 00 00 00 00 00 00 -- 05CE30

00 00 00 00 00 00 00 00 00 00 00 00 00 00 00 00 -- 05CE40
00 00 00 00 00 00 00 00 00 00 00 00 00 00 00 00 -- 05CE50
00 00 00 00 00 00 00 00 00 00 00 00 00 00 00 00 -- 05CE60
00 00 00 00 00 00 00 00 00 00 00 00 00 00 00 00 -- 05CE70
00 00 00 00 00 00 00 00 00 00 00 00 00 00 00 00 -- 05CE80
00 00 00 00 00 00 00 00 00 00 00 00 00 00 00 00 -- 05CE90
00 00 00 00 00 00 00 00 00 00 00 00 00 00 00 00 -- 05CEA0
00 00 00 00 00 00 00 00 00 00 00 00 00 00 00 00 -- 05CEB0
00 00 00 00 00 00 00 00 00 00 00 00 00 00 00 00 -- 05CEC0
00 00 00 00 00 00 00 00 00 00 00 00 00 00 00 00 -- 05CED0
00 00 00 00 00 00 00 00 00 00 00 00 00 00 00 00 -- 05CEE0
00 00 00 00 00 00 00 00 00 00 00 00 00 00 00 00 -- 05CEF0
00 00 00 00 00 00 00 00 00 00 00 00 00 00 00 00 -- 05CF00
00 00 00 00 00 00 00 00 00 00 00 00 00 00 00 00 -- 05CF10
00 00 00 00 00 00 00 00 00 00 00 00 00 00 00 00 -- 05CF20
00 00 00 00 00 00 00 00 00 00 00 00 00 00 00 00 -- 05CF30
00 00 00 00 00 00 00 00 00 00 00 00 00 00 00 00 -- 05CF40
00 00 00 00 00 00 00 00 00 00 00 00 00 00 00 00 -- 05CF50
00 00 00 00 00 00 00 00 00 00 00 00 00 00 00 00 -- 05CF60
00 00 00 00 00 00 00 00 00 00 00 00 00 00 00 00 -- 05CF70
00 00 00 00 00 00 00 00 00 00 00 00 00 00 00 00 -- 05CF80
00 00 00 00 00 00 00 00 00 00 00 00 00 00 00 00 -- 05CF90
00 00 00 00 00 00 00 00 00 00 00 00 00 00 00 00 -- 05CFA0
00 00 00 00 00 00 00 00 00 00 00 00 00 00 00 00 -- 05CFB0
00 00 00 00 00 00 00 00 00 00 00 00 00 00 00 00 -- 05CFC0
00 00 00 00 00 00 00 00 00 00 00 00 00 00 00 00 -- 05CFD0
00 00 00 00 00 00 00 00 00 00 00 00 00 00 00 00 -- 05CFE0
00 00 00 00 00 00 00 00 00 00 00 00 00 00 00 00 -- 05CFF0
00 00 00 00 00 00 00 00 00 00 00 00 00 01 FE -- 05D000
00 00 00 00 00 00 00 00 00 00 00 00 00 00 00 00 -- 05D010
00 00 00 00 00 00 00 00 00 00 00 00 00 00 00 00 -- 05D020
00 00 00 00 00 00 00 00 00 00 00 00 00 00 00 00 -- 05D030
00 00 00 00 00 00 00 00 00 00 00 00 00 00 00 00 -- 05D040
00 00 00 00 00 00 00 00 00 00 00 00 00 00 00 00 -- 05D050
00 00 00 00 00 00 00 00 00 00 00 00 00 00 00 00 -- 05D060
00 00 00 00 00 00 00 00 00 00 00 00 00 00 00 00 -- 05D070
00 00 00 00 00 00 00 00 00 00 00 00 00 00 00 00 -- 05D080
00 00 00 00 00 00 04 00 00 00 00 00 00 00 00 00 -- 05D090
00 00 00 00 00 00 00 00 00 00 00 00 00 00 00 00 -- 05D0A0
00 00 00 00 00 00 00 00 00 00 00 00 00 00 00 00 -- 05D0B0
00 00 00 00 00 00 00 00 00 00 00 00 00 00 00 00 -- 05D0C0
00 00 00 00 00 00 00 00 00 00 00 00 00 00 00 00 -- 05D0D0
00 00 00 00 00 00 00 00 00 00 00 00 00 00 00 00 -- 05D0E0
00 00 00 00 00 00 00 00 00 00 00 00 00 00 00 00 -- 05D0F0
00 00 00 00 00 00 00 00 00 00 00 00 00 00 00 00 -- 05D100
00 00 00 00 00 00 00 00 00 00 00 00 00 00 00 00 -- 05D110
00 00 00 00 00 00 00 00 00 00 00 00 00 00 00 00 -- 05D120
00 00 00 00 00 00 00 00 00 00 00 00 00 00 00 00 -- 05D130
00 00 00 00 00 00 00 00 00 00 00 00 00 00 00 00 -- 05D140
00 00 00 00 00 00 00 00 00 00 00 00 00 00 00 00 -- 05D150
```

```
00 00 00 00 00 00 00 00 00 00 00 00 00 00 00 00 -- 05D160
00 00 00 00 00 00 00 00 00 00 00 00 00 00 00 00 -- 05D170
00 00 00 00 00 00 00 00 00 00 00 00 00 00 00 00 -- 05D180
00 00 00 00 00 00 00 00 00 00 00 00 00 00 00 00 -- 05D190
00 00 00 00 00 00 00 00 00 00 00 00 00 00 00 00 -- 05D1A0
00 00 00 00 00 00 00 00 00 00 00 00 00 00 00 00 -- 05D1B0
00 00 00 00 00 00 00 00 00 00 00 00 00 00 00 00 -- 05D1C0
00 00 00 00 00 00 00 00 00 00 00 00 00 00 00 00 -- 05D1D0

00 00 00 00 00 00 00 00 00 00 00 00 00 00 00 00 -- 05D1E0
00 00 00 00 00 00 00 00 00 00 00 00 00 00 00 00 -- 05D1F0
00 00 00 00 00 00 00 00 00 00 00 00 00 00 01 FE -- 05D200
00 00 00 00 00 00 00 00 00 00 00 00 00 00 00 00 -- 05D210
00 00 00 00 00 00 00 00 00 00 00 00 00 00 00 00 -- 05D220
00 00 00 00 00 00 00 00 00 00 00 00 00 00 00 00 -- 05D230
00 00 00 00 00 00 00 00 00 00 00 00 00 00 00 00 -- 05D240
00 00 00 00 00 00 00 00 00 00 00 00 00 00 00 00 -- 05D250
00 00 00 00 00 00 00 00 00 00 00 00 00 00 00 00 -- 05D260
00 00 00 00 00 00 00 00 00 00 00 00 00 00 00 00 -- 05D270
00 00 00 00 00 00 00 00 00 00 00 00 00 00 00 00 -- 05D280
00 00 00 00 00 00 00 00 00 00 00 00 00 00 00 00 -- 05D290
00 00 00 00 00 00 00 00 00 00 00 00 00 00 00 00 -- 05D2A0
00 00 00 00 00 00 00 00 00 00 00 00 00 00 00 00 -- 05D2B0
00 00 00 00 00 00 00 00 00 00 00 00 00 00 00 00 -- 05D2C0
00 00 00 00 00 00 00 00 00 00 00 00 00 00 00 00 -- 05D2D0
00 00 00 00 00 00 00 00 00 00 00 00 00 00 00 00 -- 05D2E0
00 00 00 00 00 00 00 00 00 00 00 00 00 00 00 00 -- 05D2F0
00 00 00 00 00 00 00 00 00 00 00 00 00 00 00 00 -- 05D300
00 00 00 00 00 00 00 00 00 00 00 00 00 00 00 00 -- 05D310
00 00 00 00 00 00 00 00 00 00 00 00 00 00 00 00 -- 05D320
00 00 00 00 00 00 00 00 00 00 00 00 00 00 00 00 -- 05D330
00 00 00 00 00 00 00 00 00 00 00 00 00 00 00 00 -- 05D340
00 00 00 00 00 00 00 00 00 00 00 00 00 00 00 00 -- 05D350
00 00 00 00 00 00 00 00 00 00 00 00 00 00 00 00 -- 05D360
00 00 00 00 00 00 00 00 00 00 00 00 00 00 00 00 -- 05D370
00 00 00 00 00 00 00 00 00 00 00 00 00 00 00 00 -- 05D380
00 00 00 00 00 00 00 00 00 00 00 00 00 00 00 00 -- 05D390
00 00 00 00 00 00 00 00 00 00 00 00 00 00 00 00 -- 05D3A0
00 00 00 00 00 00 00 00 00 00 00 00 00 00 00 00 -- 05D3B0
00 00 00 00 00 00 00 00 00 00 00 00 00 00 00 00 -- 05D3C0
00 00 00 00 00 00 00 00 00 00 00 00 00 00 00 00 -- 05D3D0
00 00 00 00 00 00 00 00 00 00 00 00 00 00 00 00 -- 05D3E0
00 00 00 00 00 00 00 00 00 00 00 00 00 00 00 00 -- 05D3F0
00 00 00 00 00 00 00 00 00 00 00 00 00 00 01 FE -- 05D400
00 00 00 00 00 00 00 00 00 00 00 00 00 00 00 00 -- 05D410
00 00 00 00 00 00 00 00 00 00 00 00 00 00 00 00 -- 05D420
00 00 00 00 00 00 00 00 00 00 00 00 00 00 00 00 -- 05D430
00 00 00 00 00 00 00 00 00 00 00 00 00 00 00 00 -- 05D440
00 00 00 00 00 00 00 00 00 00 00 00 00 00 00 00 -- 05D450
00 00 00 00 00 00 00 00 00 00 00 00 00 00 00 00 -- 05D460
00 00 00 00 00 00 00 00 00 00 00 00 00 00 00 00 -- 05D470
00 00 00 00 00 00 00 00 00 00 00 00 00 00 00 00 -- 05D480
00 00 00 00 00 00 00 00 00 00 00 00 00 00 00 00 -- 05D490
00 00 00 00 00 00 00 00 00 00 00 00 00 00 00 00 -- 05D4A0
00 00 00 00 00 00 00 00 00 00 00 00 00 00 00 00 -- 05D4B0
00 00 00 00 00 00 00 00 00 00 00 00 00 00 00 00 -- 05D4C0
00 00 00 00 00 00 00 00 00 00 00 00 00 00 00 00 -- 05D4D0
00 00 00 00 00 00 00 00 00 00 00 00 00 00 00 00 -- 05D4E0
00 00 00 00 00 00 00 00 00 00 00 00 00 00 00 00 -- 05D4F0
00 00 00 00 00 00 00 00 00 00 00 00 00 00 00 00 -- 05D500
```

415

```
00 00 00 00 00 00 00 00 00 00 00 00 00 00 00 00 -- 05D510
00 00 00 00 00 00 00 00 00 00 00 00 00 00 00 00 -- 05D520
00 00 00 00 00 00 00 00 00 00 00 00 00 00 00 00 -- 05D530
00 00 00 00 00 00 00 00 00 00 00 00 00 00 00 00 -- 05D540
00 00 00 00 00 00 00 00 00 00 00 00 00 00 00 00 -- 05D550
00 00 00 00 00 00 00 00 00 00 00 00 00 00 00 00 -- 05D560
00 00 00 00 00 00 00 00 00 00 00 00 00 00 00 00 -- 05D570

00 00 00 00 00 00 00 00 00 00 00 00 00 00 00 00 -- 05D580
00 00 00 00 00 00 00 00 00 00 00 00 00 00 00 00 -- 05D590
00 00 00 00 00 00 00 00 00 00 00 00 00 00 00 00 -- 05D5A0
00 00 00 00 00 00 00 00 00 00 00 00 00 00 00 00 -- 05D5B0
00 00 00 00 00 00 00 00 00 00 00 00 00 00 00 00 -- 05D5C0
00 00 00 00 00 00 00 00 00 00 00 00 00 00 00 00 -- 05D5D0
00 00 00 00 00 00 00 00 00 00 00 00 00 00 00 00 -- 05D5E0
00 00 00 00 00 00 00 00 00 00 00 00 00 00 00 00 -- 05D5F0
00 00 00 00 00 00 00 00 00 00 00 00 00 00 01 FE -- 05D600
00 00 00 00 00 00 00 00 00 00 00 00 00 00 00 00 -- 05D610
00 00 00 00 00 00 00 00 00 00 00 00 00 00 00 00 -- 05D620
00 00 00 00 00 00 00 00 00 00 00 00 00 00 00 00 -- 05D630
00 00 00 00 00 00 00 00 00 00 00 00 00 00 00 00 -- 05D640
00 00 00 00 00 00 00 00 00 00 00 00 00 00 00 00 -- 05D650
00 00 00 00 00 00 00 00 00 00 00 00 00 00 00 00 -- 05D660
00 00 00 00 00 00 00 00 00 00 00 00 00 00 00 00 -- 05D670
00 00 00 00 00 00 00 00 00 00 00 00 00 00 00 00 -- 05D680
00 00 00 00 00 00 00 00 00 00 00 00 00 00 00 00 -- 05D690
00 00 00 00 00 00 00 00 00 00 00 00 00 00 00 00 -- 05D6A0
00 00 00 00 00 00 00 00 00 00 00 00 00 00 00 00 -- 05D6B0
00 00 00 00 00 00 00 00 00 00 00 00 00 00 00 00 -- 05D6C0
00 00 00 00 00 00 00 00 00 00 00 00 00 00 00 00 -- 05D6D0
00 00 00 00 00 00 00 00 00 00 00 00 00 00 00 00 -- 05D6E0
00 00 00 00 00 00 00 00 00 00 00 00 00 00 00 00 -- 05D6F0
00 00 00 00 00 00 00 00 00 00 00 00 00 00 00 00 -- 05D700
00 00 00 00 00 00 00 00 00 00 00 00 00 00 00 00 -- 05D710
00 00 00 00 00 00 00 00 00 00 00 00 00 00 00 00 -- 05D720
00 00 00 00 00 00 00 00 00 00 00 00 00 00 00 00 -- 05D730
00 00 00 00 00 00 00 00 00 00 00 00 00 00 00 00 -- 05D740
00 00 00 00 00 00 00 00 00 00 00 00 00 00 00 00 -- 05D750
00 00 00 00 00 00 00 00 00 00 00 00 00 00 00 00 -- 05D760
00 00 00 00 00 00 00 00 00 00 00 00 00 00 00 00 -- 05D770
00 00 00 00 00 00 00 00 00 00 00 00 00 00 00 00 -- 05D780
00 00 00 00 00 00 00 00 00 00 00 00 00 00 00 00 -- 05D790
00 00 00 00 00 00 00 00 00 00 00 00 00 00 00 00 -- 05D7A0
00 00 00 00 00 00 00 00 00 00 00 00 00 00 00 00 -- 05D7B0
00 00 00 00 00 00 00 00 00 00 00 00 00 00 00 00 -- 05D7C0
00 00 00 00 00 00 00 00 00 00 00 00 00 00 00 00 -- 05D7D0
00 00 00 00 00 00 00 00 00 00 00 00 00 00 00 00 -- 05D7E0
00 00 00 00 00 00 00 00 00 00 00 00 00 00 00 00 -- 05D7F0
00 00 00 00 00 00 00 00 00 00 00 00 00 00 01 FE -- 05D800
00 00 00 00 00 00 00 00 00 00 00 00 00 00 00 00 -- 05D810
00 00 00 00 00 00 00 00 00 00 00 00 00 00 00 00 -- 05D820
00 00 00 00 00 00 00 00 00 00 00 00 00 00 00 00 -- 05D830
00 00 00 00 00 00 00 00 00 00 00 00 00 00 00 00 -- 05D840
00 00 00 00 00 00 00 00 00 00 00 00 00 00 00 00 -- 05D850
00 00 00 00 00 00 00 00 00 00 00 00 00 00 00 00 -- 05D860
00 00 00 00 00 00 00 00 00 00 00 00 00 00 00 00 -- 05D870
00 00 00 00 00 00 00 00 00 00 00 00 00 00 00 00 -- 05D880
00 00 00 00 00 00 00 00 00 00 00 00 00 00 00 00 -- 05D890
6E 65 65 72 63 53 72 63 6C 43 6D 37 5B 1B 00 00 -- 05D8A0
31 5B 1B 41 5B 1B 00 0A 6D 30 5B 1B 74 69 6E 49 -- 05D8B0
```

```
20 65 6C 69 46 74 61 65 72 43 6E 65 70 4F 43 36 -- 05D8C0
5B 1B 00 0A 29 68 63 74 61 72 63 73 20 54 43 28 -- 05D8D0
74 69 6E 49 6E 65 65 72 63 53 72 63 6C 43 6D 37 -- 05D8E0
78 25 00 3D 20 72 6F 72 72 65 20 20 6D 30 5B 1B -- 05D8F0
65 72 43 6E 65 70 4F 20 20 6E 69 20 20 29 58 28 -- 05D900
29 68 63 74 61 72 63 73 28 20 65 6C 69 46 74 61 -- 05D910

6E 65 65 72 63 53 72 63 6C 43 6D 37 5B 1B 00 0A -- 05D920
20 20 64 6C 6F 00 20 20 6D 30 5B 1B 74 69 6E 49 -- 05D930
77 20 20 65 6C 69 66 20 20 68 63 74 61 72 63 73 -- 05D940
72 45 20 20 2E 64 65 74 65 6C 65 64 20 20 73 61 -- 05D950
6D 37 5B 1B 00 0A 29 58 28 78 25 3D 20 72 6F 72 -- 05D960
5B 1B 74 69 6E 49 6E 65 65 72 63 53 72 63 6C 43 -- 05D970
6C 69 46 74 61 65 72 43 6E 65 70 4F 20 20 6D 30 -- 05D980
20 20 29 68 63 74 61 72 63 73 20 54 43 28 20 65 -- 05D990
1B 00 0A 65 20 72 20 6F 20 66 20 65 20 62 20 20 -- 05D9A0
69 6E 49 6E 65 65 72 63 53 72 63 6C 43 6D 37 5B -- 05D9B0
65 6D 69 74 20 64 6E 2D 32 20 20 6D 30 5B 1B 74 -- 05D9C0
20 29 58 28 78 25 3D 20 72 6F 72 72 65 00 20 3A -- 05D9D0
65 6C 69 46 74 61 65 72 43 6E 65 70 4F 20 6E 69 -- 05D9E0
74 65 72 20 20 2E 29 68 63 74 61 72 63 73 28 20 -- 05D9F0
43 30 37 5B 1B 41 5B 1B 00 0A 2E 6E 72 75 01 FE -- 05DA00
5B 1B 41 5B 1B 00 0A 72 20 65 20 74 20 66 20 61 -- 05DA10
5B 1B 00 0A 72 20 65 20 74 20 66 20 61 43 30 37 -- 05DA20
61 72 61 50 54 43 74 69 6E 49 43 35 34 5B 1B 41 -- 05DA30
72 63 6C 43 6D 37 5B 1B 00 0A 73 72 65 74 65 6D -- 05DA40
20 20 6D 30 5B 1B 74 69 6E 49 6E 65 65 72 63 53 -- 05DA50
25 20 20 3D 20 20 52 20 4F 20 52 20 52 20 45 00 -- 05DA60
6E 69 20 74 6F 6E 6E 61 63 20 20 20 29 58 28 78 -- 05DA70
68 63 74 61 72 63 73 20 65 7A 69 6C 61 69 74 69 -- 05DA80
50 43 35 36 5B 1B 41 5B 1B 00 0A 65 6C 69 66 20 -- 05DA90
00 0A 73 72 65 74 65 6D 61 72 61 50 54 43 74 75 -- 05DAA0
6E 49 6E 65 65 72 63 53 72 63 6C 43 6D 37 5B 1B -- 05DAB0
4F 20 52 20 52 20 45 00 20 20 6D 30 5B 1B 74 69 -- 05DAC0
63 20 20 20 29 58 28 78 25 20 20 3D 20 20 52 20 -- 05DAD0
65 7A 69 6C 61 69 74 69 6E 69 20 74 6F 6E 6E 61 -- 05DAE0
6B 63 6F 6C 62 20 72 65 74 65 6D 61 72 61 70 20 -- 05DAF0
6E 65 65 72 63 53 72 63 6C 43 6D 37 5B 1B 00 0A -- 05DB00
6D 34 3B 31 5B 1B 20 20 6D 30 5B 1B 74 69 6E 49 -- 05DB10
73 20 20 6C 61 69 74 69 6E 69 20 20 64 61 65 52 -- 05DB20
74 61 72 63 73 20 20 6F 74 20 20 6E 65 65 72 63 -- 05DB30
53 72 63 6C 43 20 20 3A 65 6C 69 66 20 20 68 63 -- 05DB40
30 5B 1B 29 74 65 67 28 20 4F 49 6E 65 65 72 63 -- 05DB50
65 65 72 63 53 72 63 6C 43 6D 37 5B 1B 00 0A 6D -- 05DB60
20 52 20 45 00 20 20 6D 30 5B 1B 74 69 6E 49 6E -- 05DB70
20 29 58 28 78 25 20 20 3D 20 20 52 20 4F 20 52 -- 05DB80
49 6E 65 65 72 63 53 72 63 6C 43 20 20 6E 69 20 -- 05DB90
2E 74 69 78 45 20 20 2E 29 64 32 25 3D 28 20 4F -- 05DBA0
6E 65 65 72 63 53 72 63 6C 43 6D 37 5B 1B 00 0A -- 05DBB0
6D 34 3B 31 5B 1B 20 20 6D 30 5B 1B 74 69 6E 49 -- 05DBC0
20 6E 65 65 72 63 73 20 20 6C 61 69 74 69 6E 49 -- 05DBD0
20 20 6F 74 20 20 64 61 65 72 20 20 73 61 77 20 -- 05DBE0
30 5B 1B 65 6C 69 66 20 20 68 63 74 61 72 63 73 -- 05DBF0
44 4E 45 43 37 37 5B 1B 41 5B 1B 00 0A 6D 01 FE -- 05DC00
6E 65 65 72 63 53 72 63 6C 43 6D 37 5B 1B 00 0A -- 05DC10
43 33 31 5B 1B 41 5B 1B 00 0A 6D 30 5B 1B 4F 49 -- 05DC20
5B 1B 00 0A 65 74 61 64 70 55 54 43 74 69 6E 49 -- 05DC30
5B 1B 4F 49 6E 65 65 72 63 53 72 63 6C 43 6D 37 -- 05DC40
20 20 52 20 4F 20 52 20 52 20 45 00 20 20 6D 30 -- 05DC50
6E 6E 61 63 20 20 20 20 29 58 28 78 25 20 20 3D -- 05DC60
```

```
68 63 74 61. 72 63 73 20 74 72 61 74 73 20 74 6F  --  05DC70
5B 1B 41 5B 1B 00 0A 4F 2F 49 20 65 6C 69 66 20  --  05DC80
65 74 61 64 70 55 54 43 74 72 61 74 53 43 37 32  --  05DC90
6E 65 65 72 63 53 72 63 6C 43 6D 37 5B 1B 00 0A  --  05DCA0
4F 20 52 20 52 20 45 00 20 20 6D 30 5B 1B 4F 49  --  05DCB0

20 20 20 20 29 58 28 78 25 20 20 3D 20 20 52 20  --  05DCC0
20 54 43 20 74 72 61 74 73 20 74 6F 6E 6E 61 63  --  05DCD0
00 0A 65 74 61 64 70 75 20 68 63 74 61 72 63 73  --  05DCE0
65 4E 65 74 61 64 70 55 43 32 34 5B 1B 41 5B 1B  --  05DCF0
5B 1B 00 0A 29 20 20 28 20 66 75 42 54 43 74 78  --  05DD00
43 6D 37 5B 1B 00 0A 64 32 25 43 39 35 5B 1B 41  --  05DD10
20 6D 30 5B 1B 4F 49 6E 65 65 72 63 53 72 63 6C  --  05DD20
20 20 3D 20 20 52 20 4F 20 52 20 52 20 45 00 20  --  05DD30
20 74 6F 6E 6E 61 63 20 20 20 20 29 58 28 78 25  --  05DD40
54 43 20 68 74 2D 64 32 25 20 65 74 61 64 70 75  --  05DD50
63 6C 43 6D 37 5B 1B 00 0A 72 65 66 66 75 62 20  --  05DD60
45 20 20 6D 30 5B 1B 4F 49 6E 65 65 72 63 53 72  --  05DD70
28 78 25 20 20 3D 20 20 52 20 4F 20 52 20 52 20  --  05DD80
73 6E 61 72 54 61 6D 44 20 20 6E 69 20 20 29 58  --  05DD90
54 43 70 6F 74 53 43 34 36 5B 1B 41 5B 1B 00 0A  --  05DDA0
72 63 6C 43 6D 37 5B 1B 00 0A 65 74 61 64 70 55  --  05DDB0
45 00 20 20 6D 30 5B 1B 4F 49 6E 65 65 72 63 53  --  05DDC0
28 78 25 20 20 3D 20 20 52 20 4F 20 52 20 52 20  --  05DDD0
6F 74 73 20 74 6F 6E 6E 61 63 20 20 20 20 29 58  --  05DDE0
64 70 75 20 68 63 74 61 72 63 73 20 54 43 20 70  --  05DDF0
45 43 37 37 5B 1B 41 5B 1B 00 0A 65 74 61 01 FE  --  05DE00
20 69 20 61 20 77 6D 35 3B 31 5B 1B 00 0A 44 4E  --  05DE10
54 20 20 20 20 6D 30 5B 1B 67 20 6E 20 69 20 74  --  05DE20
20 65 70 79 74 20 65 75 6E 69 74 6E 6F 63 20 6F  --  05DE30
1B 00 64 25 00 0A 72 65 62 6D 75 6E 20 79 6E 61  --  05DE40
72 63 53 72 63 6C 43 6D 37 5B 1B 00 0A 41 33 5B  --  05DE50
45 42 20 20 6D 30 5B 1B 4F 49 64 6E 57 6E 65 65  --  05DE60
65 65 72 63 53 72 63 6C 43 6D 37 5B 1B 00 0A 47  --  05DE70
34 3B 31 5B 1B 20 6D 30 5B 1B 4F 49 64 6E 57 6E  --  05DE80
20 66 6F 20 74 72 61 70 20 6E 72 75 74 65 72 6D  --  05DE90
20 4D 4F 52 46 20 6E 65 65 72 63 73 20 65 68 74  --  05DEA0
6C 43 20 3A 65 6C 69 66 20 68 63 74 61 72 63 73  --  05DEB0
29 74 75 70 28 20 4F 49 6E 65 65 72 63 53 72 63  --  05DEC0
63 53 72 63 6C 43 6D 37 5B 1B 00 0A 6D 30 5B 1B  --  05DED0
45 20 20 6D 30 5B 1B 4F 49 64 6E 57 6E 65 65 72  --  05DEE0
28 78 25 20 20 3D 20 20 52 20 4F 20 52 20 52 20  --  05DEF0
72 63 53 72 63 6C 43 20 20 6E 69 20 20 20 29 58  --  05DF00
37 5B 1B 00 0A 29 74 75 70 28 20 4F 49 6E 65 65  --  05DF10
4F 49 64 6E 57 6E 65 65 72 63 53 72 63 6C 43 6D  --  05DF20
5B 1B 00 0A 44 4E 45 20 20 20 20 20 6D 30 5B 1B  --  05DF30
72 6F 6F 43 64 6E 57 74 65 47 72 63 6C 43 6D 37  --  05DF40
5B 1B 41 5B 1B 00 0A 47 45 42 20 20 6D 30 5B 1B  --  05DF50
20 2D 20 44 34 25 6D 34 5B 1B 20 3A 58 43 38 33  --  05DF60
20 3A 59 20 20 20 20 20 20 6D 30 5B 1B 44 34 25  --  05DF70
30 5B 1B 44 34 25 20 2D 20 44 34 25 6D 34 5B 1B  --  05DF80
00 00 00 01 00 00 0A 44 4E 45 20 20 20 20 20 6D  --  05DF90
00 00 00 00 00 00 00 00 00 00 00 00 04 00 03  --  05DFA0
00 00 00 00 00 00 00 00 00 00 00 00 00 00 00  --  05DFB0
00 00 00 00 00 00 00 00 00 00 00 00 00 00 00  --  05DFC0
00 00 00 00 00 00 00 00 00 00 00 00 00 00 00  --  05DFD0
00 00 00 00 00 00 00 00 00 00 00 00 00 00 00  --  05DFE0
00 00 00 00 00 00 00 00 00 00 00 00 00 00 00  --  05DFF0
00 00 00 00 00 00 00 00 00 00 00 00 00 01 FE  --  05E000
00 00 00 00 00 00 00 00 00 00 00 00 00 00 00  --  05E010
```

418

```
00 00 00 00 00 00 00 00 00 00 00 00 00 00 00 00 -- 05E020
00 00 00 00 00 00 00 00 00 00 00 00 00 00 00 00 -- 05E030
00 00 00 00 00 00 00 00 00 00 00 00 00 00 00 00 -- 05E040
00 00 00 00 00 00 00 00 00 00 00 00 00 00 00 00 -- 05E050

00 00 00 00 00 00 00 00 00 00 00 00 00 00 00 00 -- 05E060
00 00 00 00 00 00 00 00 00 00 00 00 00 00 00 00 -- 05E070
00 00 00 00 00 00 00 00 00 00 00 00 00 00 00 00 -- 05E080
00 00 00 00 00 00 00 00 00 00 00 00 00 00 00 00 -- 05E090
00 00 00 00 00 00 00 00 00 00 00 00 00 00 00 00 -- 05E0A0
00 00 00 00 00 00 00 00 00 00 00 00 00 00 00 00 -- 05E0B0
00 00 00 00 00 00 00 00 00 00 00 00 00 00 00 00 -- 05E0C0
00 00 00 00 00 00 00 00 00 00 00 00 00 00 00 00 -- 05E0D0
00 00 00 00 00 00 00 00 00 00 00 00 00 00 00 00 -- 05E0E0
00 00 00 00 00 00 00 00 00 00 00 00 00 00 00 00 -- 05E0F0
00 00 00 00 00 00 00 00 00 00 00 00 00 00 00 00 -- 05E100
00 00 00 00 00 00 00 00 00 00 00 00 00 00 00 00 -- 05E110
00 00 00 00 00 00 00 00 00 00 00 00 00 00 00 00 -- 05E120
00 00 00 00 00 00 00 00 00 00 00 00 00 00 00 00 -- 05E130
00 00 00 00 00 00 00 00 00 00 00 00 00 00 00 00 -- 05E140
00 00 00 00 00 00 00 00 00 00 00 00 00 00 00 00 -- 05E150
00 00 00 00 00 00 00 00 00 00 00 00 00 00 00 00 -- 05E160
00 00 00 00 00 00 00 00 00 00 00 00 00 00 00 00 -- 05E170
00 00 00 00 00 00 00 00 00 00 00 00 00 00 00 00 -- 05E180
00 00 00 00 00 00 00 00 00 00 00 00 00 00 00 00 -- 05E190
00 00 00 00 00 00 00 00 00 00 00 00 00 00 00 00 -- 05E1A0
00 00 00 00 00 00 00 00 00 00 00 00 00 00 00 00 -- 05E1B0
00 00 00 00 00 00 00 00 00 00 00 00 00 00 00 00 -- 05E1C0
00 00 00 00 00 00 00 00 00 00 00 00 00 00 00 00 -- 05E1D0
00 00 00 00 00 00 00 00 00 00 00 00 00 00 00 00 -- 05E1E0
00 00 00 00 00 00 00 00 00 00 00 00 00 00 00 00 -- 05E1F0
00 00 00 00 00 00 00 00 00 00 00 00 00 00 01 FE -- 05E200
00 00 00 00 00 00 00 00 00 00 00 00 00 00 00 00 -- 05E210
00 00 00 00 00 00 00 00 00 00 00 00 00 00 00 00 -- 05E220
00 00 00 00 00 00 00 00 00 00 00 00 00 00 00 00 -- 05E230
00 00 00 00 00 00 00 00 00 00 00 00 00 00 00 00 -- 05E240
00 00 00 00 00 00 00 00 00 00 00 00 00 00 00 00 -- 05E250
00 00 00 00 00 00 00 00 00 00 00 00 00 00 00 00 -- 05E260
00 00 00 00 00 00 00 00 00 00 00 00 00 00 00 00 -- 05E270
00 00 00 00 00 00 00 00 00 00 00 00 00 00 00 00 -- 05E280
00 00 00 00 00 00 00 00 00 00 00 00 00 00 00 00 -- 05E290
00 00 00 00 00 00 00 00 00 00 00 00 00 00 00 00 -- 05E2A0
00 00 00 00 00 00 00 00 00 00 00 00 00 00 00 00 -- 05E2B0
00 00 00 00 00 00 00 00 00 00 00 00 00 00 00 00 -- 05E2C0
00 00 00 00 00 00 00 00 00 00 00 00 00 00 00 00 -- 05E2D0
00 00 00 00 00 00 00 00 00 00 00 00 00 00 00 00 -- 05E2E0
00 00 00 00 00 00 00 00 00 00 00 00 00 00 00 00 -- 05E2F0
00 00 00 00 00 00 00 00 00 00 00 00 00 00 00 00 -- 05E300
00 00 00 00 00 00 00 00 00 00 00 00 00 00 00 00 -- 05E310
00 00 00 00 00 00 00 00 00 00 00 00 00 00 00 00 -- 05E320
00 00 00 00 00 00 00 00 00 00 00 00 00 00 00 00 -- 05E330
00 00 00 00 00 00 00 00 00 00 00 00 00 00 00 00 -- 05E340
00 00 00 00 00 00 00 00 00 00 00 00 00 00 00 00 -- 05E350
00 00 00 00 00 00 00 00 00 00 00 00 00 00 00 00 -- 05E360
00 00 00 00 00 00 00 00 00 00 00 00 00 00 00 00 -- 05E370
00 00 00 00 00 00 00 00 00 00 00 00 00 00 00 00 -- 05E380
00 00 00 00 00 00 00 00 00 00 00 00 00 00 00 00 -- 05E390
00 00 00 00 00 00 00 00 00 00 00 00 00 00 00 00 -- 05E3A0
00 00 00 00 00 00 00 00 00 00 00 00 00 00 00 00 -- 05E3B0
00 00 00 00 00 00 00 00 00 00 00 00 00 00 00 00 -- 05E3C0
```

```
00 00 00 00 00 00 00 00 00 00 00 00 00 00 00 00 -- 05E3D0
00 00 00 00 00 00 00 00 00 00 00 00 00 00 00 00 -- 05E3E0
00 00 00 00 00 00 00 00 00 00 00 00 00 00 00 00 -- 05E3F0

00 00 00 00 00 00 00 00 00 00 00 00 00 00 01 FE -- 05E400
00 00 00 00 00 00 00 00 00 00 00 00 00 00 00 00 -- 05E410
00 00 00 00 00 00 00 00 00 00 00 00 00 00 00 00 -- 05E420
00 00 00 00 00 00 00 00 00 00 00 00 00 00 00 00 -- 05E430
00 00 00 00 00 00 00 00 00 00 00 00 00 00 00 00 -- 05E440
00 00 00 00 00 00 00 00 00 00 00 00 00 00 00 00 -- 05E450
00 00 00 00 00 00 00 00 00 00 00 00 00 00 00 00 -- 05E460
00 00 00 00 00 00 00 00 00 00 00 00 00 00 00 00 -- 05E470
00 00 00 00 00 00 00 00 00 00 00 00 00 00 00 00 -- 05E480
00 00 00 00 00 00 00 00 00 00 00 00 00 00 00 00 -- 05E490
00 00 00 00 00 00 00 00 00 00 00 00 00 00 00 00 -- 05E4A0
00 00 00 00 00 00 00 00 00 00 00 00 00 00 00 00 -- 05E4B0
00 00 00 00 00 00 00 00 00 00 00 00 00 00 00 00 -- 05E4C0
00 00 00 00 00 00 00 00 00 00 00 00 00 00 00 00 -- 05E4D0
00 00 00 00 00 00 00 00 00 00 00 00 00 00 00 00 -- 05E4E0
00 00 00 00 00 00 00 00 00 00 00 00 00 00 00 00 -- 05E4F0
00 00 00 00 00 00 00 00 00 00 00 00 00 00 00 00 -- 05E500
00 00 00 00 00 00 00 00 00 00 00 00 00 00 00 00 -- 05E510
00 00 00 00 00 00 00 00 00 00 00 00 00 00 00 00 -- 05E520
00 00 00 00 00 00 00 00 00 00 00 00 00 00 00 00 -- 05E530
00 00 00 00 00 00 00 00 00 00 00 00 00 00 00 00 -- 05E540
00 00 00 00 00 00 00 00 00 00 00 00 00 00 00 00 -- 05E550
00 00 00 00 00 00 00 00 00 00 00 00 00 00 00 00 -- 05E560
00 00 00 00 00 00 00 00 00 00 00 00 00 00 00 00 -- 05E570
00 00 00 00 00 00 00 00 00 00 00 00 00 00 00 00 -- 05E580
00 00 00 00 00 00 00 00 00 00 00 00 00 00 00 00 -- 05E590
00 00 00 00 00 00 00 00 00 00 00 00 00 00 00 00 -- 05E5A0
00 00 00 00 00 00 00 00 00 00 00 00 00 00 00 00 -- 05E5B0
00 00 00 00 00 00 00 00 00 00 00 00 00 00 00 00 -- 05E5C0
00 00 00 00 00 00 00 00 00 00 00 00 00 00 00 00 -- 05E5D0
00 00 00 00 00 00 00 00 00 00 00 00 00 00 00 00 -- 05E5E0
00 00 00 00 00 00 00 00 00 00 00 00 00 00 00 00 -- 05E5F0
00 00 00 00 00 00 00 00 00 00 00 00 00 00 01 FE -- 05E600
00 00 00 00 00 00 00 00 00 00 00 00 00 00 00 00 -- 05E610
00 00 00 00 00 00 00 00 00 00 00 00 00 00 00 00 -- 05E620
00 00 00 00 00 00 00 00 00 00 00 00 00 00 00 00 -- 05E630
00 00 00 00 00 00 00 00 00 00 00 00 00 00 00 00 -- 05E640
00 00 00 00 00 00 00 00 00 00 00 00 00 00 00 00 -- 05E650
00 00 00 00 00 00 00 00 00 00 00 00 00 00 00 00 -- 05E660
00 00 00 00 00 00 00 00 00 00 00 00 00 00 00 00 -- 05E670
00 00 00 00 00 00 00 00 00 00 00 00 00 00 00 00 -- 05E680
00 00 00 00 00 00 00 00 00 00 00 00 00 00 00 00 -- 05E690
00 00 00 00 00 00 00 00 00 00 00 00 00 00 00 00 -- 05E6A0
00 00 00 00 00 00 00 00 00 00 00 00 00 00 00 00 -- 05E6B0
00 00 00 00 00 00 00 00 00 00 00 00 00 00 00 00 -- 05E6C0
00 00 00 00 00 00 00 00 00 00 00 00 00 00 00 00 -- 05E6D0
00 00 00 00 00 00 00 00 00 00 00 00 00 00 00 00 -- 05E6E0
00 00 00 00 00 00 00 00 00 00 00 00 00 00 00 00 -- 05E6F0
00 00 00 00 00 00 00 00 00 00 00 00 00 00 00 00 -- 05E700
00 00 00 00 00 00 00 00 00 00 00 00 00 00 00 00 -- 05E710
6D 75 6E 5F 67 65 73 20 00 00 00 00 00 00 00 00 -- 05E720
20 6D 75 6E 5F 67 65 73 20 00 0A 64 25 20 3D 20 -- 05E730
3D 20 6D 75 6E 5F 67 65 73 20 00 0A 64 25 20 3D -- 05E740
73 65 72 00 64 6E 65 70 73 75 73 00 0A 64 25 20 -- 05E750
67 65 73 20 00 65 74 75 63 65 78 65 00 65 6D 75 -- 05E760
5F 67 65 73 20 00 0A 64 25 20 3D 20 6D 75 6E 5F -- 05E770
```

```
00 00 00 07 00 01 00 0A 64 25 20 3D 20 6D 75 6E -- 05E780
00 00 00 00 00 00 00 00 00 00 00 00 00 00 00 00 -- 05E790
00 00 00 00 00 00 00 00 00 00 00 00 00 00 00 00 -- 05E7A0
00 00 00 00 00 00 00 00 00 00 00 00 00 00 00 00 -- 05E7B0
00 00 00 00 00 00 00 00 00 00 00 00 00 00 00 00 -- 05E7C0
00 00 00 00 00 00 00 00 00 00 00 00 00 00 00 00 -- 05E7D0
00 00 00 00 00 00 00 00 00 00 00 00 00 00 00 00 -- 05E7E0
00 00 00 00 00 00 00 00 00 00 00 00 00 00 00 00 -- 05E7F0
00 00 00 00 00 00 00 00 00 00 00 00 00 00 01 FE -- 05E800
00 00 00 00 00 00 00 00 00 00 00 00 00 00 00 00 -- 05E810
00 00 00 00 00 00 00 00 00 00 00 00 00 00 00 00 -- 05E820
00 00 00 00 00 00 00 00 00 00 00 00 00 00 00 00 -- 05E830
00 00 00 00 00 00 00 00 00 00 00 00 00 00 00 00 -- 05E840
00 00 00 00 00 00 00 00 00 00 00 00 00 00 00 00 -- 05E850
00 00 00 00 00 00 00 00 00 00 00 00 00 00 00 00 -- 05E860
00 00 00 00 00 00 00 00 00 00 00 00 00 00 00 00 -- 05E870
00 00 00 00 00 00 00 00 00 00 00 00 00 00 00 00 -- 05E880
00 00 00 00 00 00 00 00 00 00 00 00 00 00 00 00 -- 05E890
00 00 00 00 00 00 00 00 00 00 00 00 00 00 00 00 -- 05E8A0
00 00 00 00 00 00 00 00 00 00 00 00 00 00 00 00 -- 05E8B0
00 00 00 00 00 00 00 00 00 00 00 00 00 00 00 00 -- 05E8C0
00 00 00 00 00 00 00 00 00 00 00 00 00 00 00 00 -- 05E8D0
00 00 00 00 00 00 00 00 00 00 00 00 00 00 00 00 -- 05E8E0
00 00 00 00 00 00 00 00 00 00 00 00 00 00 00 00 -- 05E8F0
00 00 00 00 00 00 00 00 00 00 00 00 00 00 00 00 -- 05E900
00 00 00 00 00 00 00 00 00 00 00 00 00 00 00 00 -- 05E910
00 00 00 00 00 00 00 00 00 00 00 00 00 00 00 00 -- 05E920
00 00 00 00 00 00 00 00 00 00 00 00 00 00 00 00 -- 05E930
00 00 00 00 00 00 00 00 00 00 00 00 00 00 00 00 -- 05E940
00 00 00 00 00 00 00 00 00 00 00 00 00 00 00 00 -- 05E950
00 00 00 00 00 00 00 00 00 00 00 00 00 00 00 00 -- 05E960
00 00 00 00 00 00 00 00 00 00 00 00 00 00 00 00 -- 05E970
00 00 00 00 00 00 00 00 00 00 00 00 00 00 00 00 -- 05E980
00 00 00 00 00 00 00 00 00 00 00 00 00 00 00 00 -- 05E990
00 00 00 00 00 00 00 00 00 00 00 00 00 00 00 00 -- 05E9A0
00 00 00 00 00 00 00 00 00 00 00 00 00 00 00 00 -- 05E9B0
00 00 00 00 00 00 00 00 00 00 00 00 00 00 00 00 -- 05E9C0
00 00 00 00 00 00 00 00 00 00 00 00 00 00 00 00 -- 05E9D0
00 00 00 00 00 00 00 00 00 00 00 00 00 00 00 00 -- 05E9E0
00 00 00 00 00 00 00 00 00 00 00 00 00 00 00 00 -- 05E9F0
00 00 00 00 00 00 00 00 00 00 00 00 00 00 01 FE -- 05EA00
00 00 00 00 00 00 00 00 00 00 00 00 00 00 00 00 -- 05EA10
00 00 00 00 00 00 00 00 00 00 00 00 00 00 00 00 -- 05EA20
00 00 00 00 00 00 00 00 00 00 00 00 00 00 00 00 -- 05EA30
00 00 00 00 00 00 00 00 00 00 00 00 00 00 00 00 -- 05EA40
00 00 00 00 00 00 00 00 00 00 00 00 00 00 00 00 -- 05EA50
00 00 00 00 00 00 00 00 00 00 00 00 00 00 00 00 -- 05EA60
00 00 00 00 00 00 00 00 00 00 00 00 00 00 00 00 -- 05EA70
00 00 00 00 00 00 00 00 00 00 00 00 00 00 00 00 -- 05EA80
00 00 00 00 00 00 00 00 00 00 00 00 00 00 00 00 -- 05EA90
00 00 00 00 00 00 00 00 00 00 00 00 00 00 00 00 -- 05EAA0
00 00 00 00 00 00 00 00 00 00 00 00 00 00 00 00 -- 05EAB0
00 00 00 00 00 00 00 00 00 00 00 00 00 00 00 00 -- 05EAC0
00 00 00 00 00 00 00 00 00 00 00 00 00 00 00 00 -- 05EAD0
00 00 00 00 00 00 00 00 00 00 00 00 00 00 00 00 -- 05EAE0
00 00 00 00 00 00 00 00 00 00 00 00 00 00 00 00 -- 05EAF0
00 00 00 00 00 00 00 00 00 00 00 00 00 00 00 00 -- 05EB00
00 00 00 00 00 00 00 00 00 00 00 00 00 00 00 00 -- 05EB10
00 00 00 00 00 00 00 00 00 00 00 00 00 00 00 00 -- 05EB20
```

```
00 00 00 00 00 00 00 00 00 00 00 00 00 00 00 00 -- 05EB30
00 00 00 00 00 00 00 00 00 00 00 00 00 00 00 00 -- 05EB40
00 00 00 00 00 00 00 00 00 00 00 00 00 00 00 00 -- 05EB50
00 00 00 00 00 00 00 00 00 00 00 00 00 00 00 00 -- 05EB60
00 00 00 00 00 00 00 00 00 00 00 00 00 00 00 00 -- 05EB70
00 00 00 00 00 00 00 00 00 00 00 00 00 00 00 00 -- 05EB80
00 00 00 00 00 00 00 00 00 00 00 00 00 00 00 00 -- 05EB90
00 00 00 00 00 00 00 00 00 00 00 00 00 00 00 00 -- 05EBA0
00 00 00 00 00 00 00 00 00 00 00 00 00 00 00 00 -- 05EBB0
00 00 00 00 00 00 00 00 00 00 00 00 00 00 00 00 -- 05EBC0
00 00 00 00 00 00 00 00 00 00 00 00 00 00 00 00 -- 05EBD0
00 00 00 00 00 00 00 00 00 00 00 00 00 00 00 00 -- 05EBE0
00 00 00 00 00 00 00 00 00 00 00 00 00 00 00 00 -- 05EBF0
00 00 00 00 00 00 00 00 00 00 00 00 00 00 01 FE -- 05EC00
00 00 00 00 00 00 00 00 00 00 00 00 00 00 00 00 -- 05EC10
00 00 00 00 00 00 00 00 00 00 00 00 00 00 00 00 -- 05EC20
00 00 00 00 00 00 00 00 00 00 00 00 00 00 00 00 -- 05EC30
00 00 00 00 00 00 00 00 00 00 00 00 00 00 00 00 -- 05EC40
00 00 00 00 00 00 00 00 00 00 00 00 00 00 00 00 -- 05EC50
00 00 00 00 00 00 00 00 00 00 00 00 00 00 00 00 -- 05EC60
00 00 00 00 00 00 00 00 00 00 00 00 00 00 00 00 -- 05EC70
00 00 00 00 00 00 00 00 00 00 00 00 00 00 00 00 -- 05EC80
00 00 00 00 00 00 00 00 00 00 00 00 00 00 00 00 -- 05EC90
00 00 00 00 00 00 00 00 00 00 00 00 00 00 00 00 -- 05ECA0
00 00 00 00 00 00 00 00 00 00 00 00 00 00 00 00 -- 05ECB0
00 00 00 00 00 00 00 00 00 00 00 00 00 00 00 00 -- 05ECC0
00 00 00 00 00 00 00 00 00 00 00 00 00 00 00 00 -- 05ECD0
00 00 00 00 00 00 00 00 00 00 00 00 00 00 00 00 -- 05ECE0
00 00 00 00 00 00 00 00 00 00 00 00 00 00 00 00 -- 05ECF0
00 00 00 00 00 00 00 00 00 00 00 00 00 00 00 00 -- 05ED00
00 00 00 00 00 00 00 00 00 00 00 00 00 00 00 00 -- 05ED10
00 00 00 00 00 00 00 00 00 00 00 00 00 00 00 00 -- 05ED20
00 00 00 00 00 00 00 00 00 00 00 00 00 00 00 00 -- 05ED30
00 00 00 00 00 00 00 00 00 00 00 00 00 00 00 00 -- 05ED40
00 00 00 00 00 00 00 00 00 00 00 00 00 00 00 00 -- 05ED50
00 00 00 00 00 00 00 00 00 00 00 00 00 00 00 00 -- 05ED60
5F 62 6D 66 6D 37 5B 1B 00 00 00 00 00 00 00 00 -- 05ED70
5B 1B 00 0A 47 45 42 20 20 6D 30 5B 1B 77 65 6E -- 05ED80
45 20 20 6D 30 5B 1B 77 65 6E 5F 62 6D 66 6D 37 -- 05ED90
66 66 75 62 20 42 46 53 20 20 20 2E 52 4F 52 52 -- 05EDA0
72 65 76 6F 20 79 72 6F 6D 65 6D 20 20 3A 72 65 -- 05EDB0
53 25 43 37 31 5B 1B 41 5B 1B 00 0A 77 6F 6C 66 -- 05EDC0
6D 30 5B 1B 64 33 25 6D 34 5B 1B 20 20 3A 42 46 -- 05EDD0
25 2D 64 33 25 6D 34 5B 1B 28 20 73 77 6F 72 20 -- 05EDE0
34 5B 1B 20 20 20 20 20 2C 29 6D 30 5B 1B 64 33 -- 05EDF0
6D 75 6C 6F 63 20 6D 30 5B 1B 64 33 25 6D 01 FE -- 05EE00
1B 64 33 25 2D 64 33 25 6D 34 5B 1B 28 20 73 6E -- 05EE10
65 6E 5F 62 6D 66 6D 37 5B 1B 00 0A 29 6D 30 5B -- 05EE20
6F 64 6E 69 77 20 42 46 53 20 20 6D 30 5B 1B 77 -- 05EE30
5B 1B 64 33 25 2D 64 33 25 6D 34 5B 1B 20 20 77 -- 05EE40
3B 31 5B 1B 43 30 33 5B 1B 41 5B 1B 00 0A 6D 30 -- 05EE50
66 6D 37 5B 1B 00 0A 6D 30 5B 1B 54 45 47 6D 34 -- 05EE60
20 52 20 45 20 20 6D 30 5B 1B 77 65 6E 5F 62 6D -- 05EE70
20 29 58 28 78 25 20 20 3D 20 20 52 20 4F 20 52 -- 05EE80
65 67 28 20 73 6E 61 72 54 61 6D 44 20 6E 69 20 -- 05EE90
43 36 33 5B 1B 41 5B 1B 00 0A 29 42 46 53 20 74 -- 05EEA0
30 5B 1B 72 6F 63 5F 6C 65 78 69 50 6D 37 5B 1B -- 05EEB0
72 20 6D 30 5B 1B 64 33 25 6D 34 5B 1B 20 20 6D -- 05EEC0
6D 30 5B 1B 64 35 25 6D 34 5B 1B 20 20 73 77 6F -- 05EED0
```

422

```
32 37 5B 1B 41 5B 1B 00 0A 73 6C 65 78 69 70 20 -- 05EEE0
00 0A 6D 30 5B 1B 54 55 50 6D 34 3B 31 5B 1B 43 -- 05EEF0
20 6D 30 5B 1B 77 65 6E 5F 62 6D 66 6D 37 5B 1B -- 05EF00
78 25 20 3D 20 20 52 20 4F 20 52 20 52 20 45 20 -- 05EF10
6E 61 72 54 61 6D 44 20 20 6E 69 20 20 29 58 28 -- 05EF20
5B 1B 00 0A 29 42 46 53 20 74 75 70 28 20 20 73 -- 05EF30
5B 1B 00 0A 44 4E 45 43 37 37 5B 1B 00 0A 41 32 -- 05EF40
5B 1B 77 65 6E 5F 6B 73 61 6D 5F 62 6D 66 6D 37 -- 05EF50
62 6D 66 6D 37 5B 1B 00 0A 47 45 42 20 20 6D 30 -- 05EF60
45 20 20 6D 30 5B 1B 77 65 6E 5F 6B 73 61 6D 5F -- 05EF70
66 75 62 20 42 46 53 20 20 20 20 2E 52 4F 52 52 -- 05EF80
65 76 6F 20 79 72 6F 6D 65 6D 20 20 3A 72 65 66 -- 05EF90
6D 5F 62 6D 66 6D 37 5B 1B 00 0A 77 6F 6C 66 72 -- 05EFA0
52 52 45 20 20 6D 30 5B 1B 77 65 6E 5F 6B 73 61 -- 05EFB0
75 62 20 54 55 4F 59 41 4C 20 20 20 20 2E 52 4F -- 05EFC0
76 6F 20 79 72 6F 6D 65 6D 20 20 3A 72 65 66 66 -- 05EFD0
43 35 32 5B 1B 41 5B 1B 00 0A 77 6F 6C 66 72 65 -- 05EFE0
30 5B 1B 64 33 25 6D 34 5B 1B 20 3A 42 46 53 25 -- 05EFF0
33 25 6D 34 5B 1B 28 20 73 77 6F 72 20 6D 01 FE -- 05F000
6D 34 5B 1B 20 2C 29 6D 30 5B 1B 64 33 25 2D 64 -- 05F010
20 73 6E 6D 75 6C 6F 63 20 6D 30 5B 1B 64 33 25 -- 05F020
6D 30 5B 1B 64 33 25 2D 64 33 25 6D 34 5B 1B 28 -- 05F030
61 6D 5F 62 6D 66 6D 37 5B 1B 41 5B 1B 00 0A 29 -- 05F040
42 46 53 20 20 00 6D 30 5B 1B 77 65 6E 5F 6B 73 -- 05F050
5B 1B 64 34 25 2D 64 34 25 6D 34 5B 1B 3A 78 20 -- 05F060
34 25 2D 64 34 25 6D 34 5B 1B 3A 79 20 20 6D 30 -- 05F070
54 55 4F 59 41 4C 20 20 20 20 00 6D 30 5B 1B 64 -- 05F080
5B 1B 64 34 25 2D 64 34 25 6D 34 5B 1B 3A 78 20 -- 05F090
34 25 2D 64 34 25 6D 34 5B 1B 3A 79 20 20 6D 30 -- 05F0A0
1B 43 35 37 5B 1B 41 5B 1B 00 0A 6D 30 5B 1B 64 -- 05F0B0
1B 00 0A 6D 30 5B 1B 31 54 45 47 6D 34 3B 31 5B -- 05F0C0
1B 77 65 6E 5F 6B 73 61 6D 5F 62 6D 66 6D 37 5B -- 05F0D0
20 20 52 20 4F 20 52 20 52 20 45 20 20 6D 30 5B -- 05F0E0
61 6D 44 20 6E 69 20 20 29 58 28 78 25 20 20 3D -- 05F0F0
0A 29 42 46 53 20 74 65 67 28 20 73 6E 61 72 54 -- 05F100
32 6D 34 3B 31 5B 1B 43 39 37 5B 1B 41 5B 1B 00 -- 05F110
61 6D 5F 62 6D 66 6D 37 5B 1B 00 0A 6D 30 5B 1B -- 05F120
20 52 20 45 20 20 6D 30 5B 1B 77 65 6E 5F 6B 73 -- 05F130
20 29 58 28 78 25 20 20 3D 20 20 52 20 4F 20 52 -- 05F140
65 67 28 20 73 6E 61 72 54 61 6D 44 20 6E 69 20 -- 05F150
4E 6D 37 5B 1B 00 0A 29 54 55 4F 59 41 4C 20 74 -- 05F160
64 36 25 20 6D 30 5B 1B 72 6F 63 5F 78 69 50 4F -- 05F170
20 6D 6F 72 46 20 20 00 2E 73 6C 65 78 69 70 20 -- 05F180
34 25 6E 6D 75 6C 6F 63 20 2C 64 34 25 77 6F 72 -- 05F190
63 20 2C 64 34 25 77 6F 72 20 6F 74 20 20 00 64 -- 05F1A0
00 0A 41 32 5B 1B 00 0A 64 34 25 6E 6D 75 6C 6F -- 05F1B0
30 5B 1B 72 6F 63 5F 6C 65 78 69 50 6D 37 5B 1B -- 05F1C0
20 20 00 2E 73 6C 65 78 69 70 20 64 36 25 20 6D -- 05F1D0
6C 6F 63 20 2C 64 34 25 77 6F 72 20 6D 6F 72 46 -- 05F1E0
25 77 6F 72 20 6F 74 20 20 00 64 34 25 6E 6D 75 -- 05F1F0
0A 64 34 25 6E 6D 75 6C 6F 63 20 2C 64 34 01 FE -- 05F200
6D 5F 62 6D 66 6D 37 5B 1B 00 0A 41 32 5B 1B 00 -- 05F210
52 20 45 20 20 6D 30 5B 1B 77 65 6E 5F 6B 73 61 -- 05F220
29 58 28 78 25 20 20 3D 20 20 52 20 4F 20 52 20 -- 05F230
28 20 73 6E 61 72 54 61 6D 44 20 6E 69 20 20 20 -- 05F240
50 6D 37 5B 1B 0A 00 0A 29 42 46 53 20 74 75 70 -- 05F250
61 4C 20 20 6D 30 5B 1B 72 6F 63 5F 6C 65 78 69 -- 05F260
70 20 6D 30 5B 1B 64 36 25 6D 34 5B 1B 20 74 73 -- 05F270
```

423

```
1B 43 37 37 5B 1B 41 5B 1B 00 0A 73 6C 65 78 69 -- 05F280
5B 1B 00 0A 6D 30 5B 1B 54 55 50 6D 34 3B 31 5B -- 05F290
5B 1B 77 65 6E 5F 6B 73 61 6D 5F 62 6D 66 6D 37 -- 05F2A0
3D 20 20 52 20 4F 20 52 20 52 20 45 20 20 6D 30 -- 05F2B0
54 61 6D 44 20 6E 69 20 20 29 58 28 78 25 20 20 -- 05F2C0
00 0A 29 42 46 53 20 74 75 70 28 20 73 6E 61 72 -- 05F2D0
77 65 6E 5F 6B 73 61 6D 5F 62 6D 66 6D 37 5B 1B -- 05F2E0
20 72 20 54 20 61 20 6D 20 44 20 20 6D 30 5B 1B -- 05F2F0
20 74 20 75 20 70 20 28 20 20 20 73 20 6E 20 61 -- 05F300
20 65 20 62 20 20 20 20 20 20 20 20 20 20 20 29 -- 05F310
31 37 5B 1B 41 5B 1B 00 0A 65 20 72 20 6F 20 66 -- 05F320
6D 37 5B 1B 00 0A 72 20 65 20 74 20 66 20 61 43 -- 05F330
6D 30 5B 1B 77 65 6E 5F 6B 73 61 6D 5F 62 6D 66 -- 05F340
25 20 3D 20 20 52 20 4F 20 52 20 52 20 45 20 20 -- 05F350
61 72 54 61 6D 44 20 20 6E 69 20 20 29 58 28 78 -- 05F360
1B 00 0A 29 42 46 53 20 74 75 70 28 20 20 73 6E -- 05F370
1B 77 65 6E 5F 6B 73 61 6D 5F 62 6D 66 6D 37 5B -- 05F380
1B 0A 00 00 0A 44 4E 45 20 20 20 20 20 6D 30 5B -- 05F390
1B 6E 4F 5F 6F 66 6E 49 5F 72 63 6C 43 6D 37 5B -- 05F3A0
63 6C 63 43 30 34 5B 1B 41 5B 1B 00 0A 6D 30 5B -- 05F3B0
45 55 52 54 20 3D 20 6E 6F 5F 6F 66 6E 69 5F 72 -- 05F3C0
20 20 20 20 20 20 2E 74 69 78 45 20 20 20 20 2E -- 05F3D0
72 43 43 34 31 5B 1B 41 5B 1B 00 0A 44 4E 45 20 -- 05F3E0
00 0A 77 6F 64 6E 69 57 6F 66 6E 49 65 74 61 65 -- 05F3F0
0A 6C 62 74 65 53 43 32 33 5B 1B 41 5B 1B 01 FE -- 05F400
5B 1B 00 0A 44 4E 45 43 37 37 5B 1B 41 5B 1B 00 -- 05F410
49 5F 72 63 6C 43 6D 37 5B 1B 43 38 35 5B 1B 41 -- 05F420
5B 1B 00 0A 6D 30 5B 1B 6C 6C 69 46 5F 6F 66 6E -- 05F430
5F 6F 66 6E 69 5F 72 63 6C 63 43 30 34 5B 1B 41 -- 05F440
78 45 20 20 20 2E 45 53 4C 41 46 20 3D 20 6E 6F -- 05F450
1B 00 0A 44 4E 45 20 20 20 20 20 20 20 2E 74 69 -- 05F460
6D 30 5B 1B 6F 66 6E 49 5F 72 63 6C 43 6D 37 5B -- 05F470
20 52 20 52 20 45 43 38 31 5B 1B 41 5B 1B 00 0A -- 05F480
6E 6F 72 77 20 2D 20 64 36 25 20 20 3A 52 20 4F -- 05F490
20 2E 72 65 62 6D 75 6E 20 74 6E 69 6F 70 20 67 -- 05F4A0
20 20 20 20 20 20 20 20 20 20 2E 74 69 78 45 20 -- 05F4B0
34 5B 1B 43 31 31 5B 1B 41 5B 1B 00 0A 44 4E 45 -- 05F4C0
20 20 6D 30 5B 1B 64 31 25 20 74 6E 69 6F 50 6D -- 05F4D0
64 33 25 3A 4D 20 20 64 33 25 2D 64 33 25 3A 43 -- 05F4E0
20 64 33 25 2D 64 33 25 3D 59 20 20 64 33 25 2D -- 05F4F0
61 52 20 20 20 2E 64 33 25 2D 64 33 25 3D 42 20 -- 05F500
20 3A 74 6E 69 6F 50 00 0A 64 31 25 3D 65 67 6E -- 05F510
20 20 20 64 31 25 20 20 66 6F 20 20 64 31 25 20 -- 05F520
20 4D 20 20 20 43 20 20 20 20 20 20 20 00 20 20 -- 05F530
25 20 72 6F 66 65 42 00 20 42 20 20 20 59 20 20 -- 05F540
41 00 64 33 25 20 64 33 25 20 64 33 25 20 64 33 -- 05F550
64 33 25 20 64 33 25 20 64 33 25 20 72 65 74 66 -- 05F560
20 20 20 20 20 20 20 20 20 20 20 00 64 33 25 20 -- 05F570
65 67 6E 61 52 00 20 20 20 20 20 20 20 20 20 20 -- 05F580
20 20 20 20 20 20 20 20 20 64 31 25 20 20 20 3A -- 05F590
1B 00 0A 44 4E 45 43 37 37 5B 1B 41 5B 1B 00 20 -- 05F5A0
66 66 4F 5F 6F 66 6E 49 5F 72 63 6C 43 6D 37 5B -- 05F5B0
5B 1B 41 5B 1B 00 0A 47 45 42 20 20 6D 30 5B 1B -- 05F5C0
20 6E 6F 5F 6F 66 6E 69 5F 72 63 6C 63 43 30 34 -- 05F5D0
2E 74 69 78 45 20 20 20 2E 45 53 4C 41 46 20 3D -- 05F5E0
6F 66 6E 49 74 43 43 35 34 5B 1B 41 5B 1B 00 0A -- 05F5F0
65 6C 6C 61 63 20 20 73 61 77 20 20 6E 4F 01 FE -- 05F600
0A 44 4E 45 20 20 20 20 20 20 20 20 20 20 20 64 -- 05F610
5F 72 63 6C 43 5F 76 65 72 50 6D 37 5B 1B 0A 00 -- 05F620
```

424

```
1B 00 0A 47 45 42 20 20 6D 30 5B 1B 6F 66 6E 49 -- 05F630
6F 66 6E 69 5F 72 63 6C 63 43 30 34 5B 1B 41 5B -- 05F640
45 20 20 20 2E 45 53 4C 41 46 20 3D 20 6E 6F 5F -- 05F650
00 0A 44 4E 45 20 20 20 20 20 20 20 2E 74 69 78 -- 05F660
6E 49 5F 72 63 6C 43 5F 76 65 72 50 6D 37 5B 1B -- 05F670
6E 69 6E 72 75 74 65 72 20 20 6D 30 5B 1B 6F 66 -- 05F680
1B 0A 64 31 25 20 20 3A 65 75 6C 61 76 20 20 67 -- 05F690
37 5B 1B 0A 00 0A 44 4E 45 43 37 37 5B 1B 41 5B -- 05F6A0
1B 6F 66 6E 49 5F 72 63 6C 43 5F 72 72 75 43 6D -- 05F6B0
34 5B 1B 41 5B 1B 00 0A 47 45 42 20 20 6D 30 5B -- 05F6C0
3D 20 6E 6F 5F 6F 66 6E 69 5F 72 63 6C 63 43 30 -- 05F6D0
20 2E 74 69 78 45 20 20 20 2E 45 53 4C 41 46 20 -- 05F6E0
43 6D 37 5B 1B 00 0A 44 4E 45 20 20 20 20 20 20 -- 05F6F0
30 5B 1B 6F 66 6E 49 5F 72 63 6C 43 5F 72 72 75 -- 05F700
61 76 20 20 67 6E 69 6E 72 75 74 65 72 20 20 6D -- 05F710
37 5B 1B 41 5B 1B 0A 64 31 25 20 20 3A 65 75 6C -- 05F720
74 78 65 4E 6D 37 5B 1B 0A 00 0A 44 4E 45 43 37 -- 05F730
20 20 6D 30 5B 1B 6F 66 6E 49 5F 72 63 6C 43 5F -- 05F740
63 6C 63 43 30 34 5B 1B 41 5B 1B 00 0A 47 45 42 -- 05F750
53 4C 41 46 20 3D 20 6E 6F 5F 6F 66 6E 69 5F 72 -- 05F760
20 20 20 20 20 20 2E 74 69 78 45 20 20 20 2E 45 -- 05F770
43 5F 74 78 65 4E 6D 37 5B 1B 00 0A 44 4E 45 20 -- 05F780
65 72 20 20 6D 30 5B 1B 6F 66 6E 49 5F 72 63 6C -- 05F790
20 3A 65 75 6C 61 76 20 20 67 6E 69 6E 72 75 74 -- 05F7A0
44 4E 45 43 37 37 5B 1B 41 5B 1B 0A 64 31 25 20 -- 05F7B0
00 00 00 00 00 00 00 00 00 00 00 00 00 00 00 0A -- 05F7C0
00 00 00 00 00 00 00 00 00 00 00 00 00 00 00 00 -- 05F7D0
00 00 00 00 00 00 00 00 00 00 00 00 00 00 00 00 -- 05F7E0
00 00 00 00 00 00 00 00 00 00 00 00 00 00 00 00 -- 05F7F0
00 00 00 00 00 00 00 00 00 00 00 00 00 00 01 FE -- 05F800
00 00 00 00 00 00 00 00 00 00 00 00 00 00 00 00 -- 05F810
00 00 00 00 00 00 00 00 00 00 00 00 00 00 00 00 -- 05F820
00 00 00 00 00 00 00 00 00 00 00 00 00 00 00 00 -- 05F830
00 00 00 00 00 00 00 00 00 00 00 00 00 00 00 00 -- 05F840
00 00 00 00 00 00 00 00 00 00 00 00 00 00 00 00 -- 05F850
00 00 00 00 00 00 00 00 00 00 00 00 00 00 00 00 -- 05F860
00 00 00 00 00 00 00 00 00 00 00 00 00 00 00 00 -- 05F870
00 00 00 00 00 00 00 00 00 00 00 00 00 00 00 00 -- 05F880
00 00 00 00 00 00 00 00 00 00 00 00 00 00 00 00 -- 05F890
00 00 00 00 00 00 00 00 00 00 00 00 00 00 00 00 -- 05F8A0
00 00 00 00 00 00 00 00 00 00 00 00 00 00 00 00 -- 05F8B0
00 00 00 00 00 00 00 00 00 00 00 00 00 00 00 00 -- 05F8C0
00 00 00 00 00 00 00 00 00 00 00 00 00 00 00 00 -- 05F8D0
00 00 00 00 00 00 00 00 00 00 00 00 00 00 00 00 -- 05F8E0
20 20 20 20 20 20 00 00 00 00 00 00 00 00 00 00 -- 05F8F0
00 20 20 20 20 20 20 20 20 20 20 20 20 20 20 20 -- 05F900
59 25 20 20 4D 25 20 20 43 25 20 20 20 20 20 20 -- 05F910
20 20 20 20 20 20 20 20 20 20 00 20 42 25 20 20 -- 05F920
65 73 61 42 00 20 20 20 20 20 20 20 20 20 20 20 -- 05F930
33 25 7C 64 33 25 7C 64 33 25 7C 64 33 25 20 20 -- 05F940
20 20 20 20 20 20 20 20 20 20 20 20 20 20 00 64 -- 05F950
33 25 20 20 65 76 6F 4D 00 20 20 20 20 20 20 20 -- 05F960
20 20 00 64 33 25 7C 64 33 25 7C 64 33 25 7C 64 -- 05F970
20 20 20 20 20 20 20 20 20 20 20 20 20 20 20 20 -- 05F980
33 25 7C 64 33 25 72 65 6C 6C 69 46 00 20 20 20 -- 05F990
20 20 20 20 20 20 00 64 33 25 7C 64 33 25 7C 64 -- 05F9A0
00 20 20 20 20 20 20 20 20 20 20 20 20 20 20 20 -- 05F9B0

43 20 20 20 20 65 7A 69 53 20 20 20 20 20 20 20 -- 05F9C0
20 20 20 20 20 20 20 20 20 20 00 20 65 76 72 75 -- 05F9D0
```

425

```
65 67 64 45 00 20 20 20 20 20 20 20 20 20 20 20 -- 05F9E0
64 45 00 73 25 20 7C 20 6D 6D 66 31 2E 34 25 3A -- 05F9F0
7C 20 68 63 6E 49 66 31 2E 34 25 3A 65 67 01 FE -- 05FA00
20 20 20 20 20 20 20 20 20 20 20 20 00 73 25 20 -- 05FA10
20 20 65 73 61 42 00 20 20 20 20 20 20 20 20 20 -- 05FA20
00 64 33 25 7C 64 33 25 7C 64 33 25 7C 64 33 25 -- 05FA30
20 20 20 20 20 20 20 20 20 20 20 20 20 20 20 20 -- 05FA40
7C 64 33 25 20 20 65 76 6F 4D 00 20 20 20 20 20 -- 05FA50
20 20 20 20 00 64 33 25 7C 64 33 25 7C 64 33 25 -- 05FA60
20 20 20 20 20 20 20 20 20 20 20 20 20 20 20 20 -- 05FA70
7C 64 33 25 7C 64 33 25 72 65 6C 6C 69 46 00 20 -- 05FA80
20 20 20 20 20 20 20 20 00 64 33 25 7C 64 33 25 -- 05FA90
64 45 00 20 20 20 20 20 20 20 20 20 20 20 20 20 -- 05FAA0
00 73 25 20 7C 20 6D 6D 66 31 2E 34 25 3A 65 67 -- 05FAB0
7C 20 68 63 6E 49 66 31 2E 34 25 3A 65 67 64 45 -- 05FAC0
67 69 65 48 20 20 20 20 20 20 6D 6D 00 73 25 20 -- 05FAD0
20 20 68 63 6E 49 00 20 68 74 64 69 57 20 74 68 -- 05FAE0
00 20 68 74 64 69 57 20 74 68 67 69 65 48 20 20 -- 05FAF0
20 20 20 20 20 20 20 20 20 20 20 20 20 20 20 20 -- 05FB00
36 25 20 3A 20 20 20 20 4C 54 00 20 20 20 20 20 -- 05FB10
20 20 20 20 20 20 00 66 32 2E 36 25 20 66 32 2E -- 05FB20
00 20 20 20 20 20 20 20 20 20 20 20 20 20 20 20 -- 05FB30
36 25 20 66 32 2E 36 25 20 3A 20 20 20 20 52 42 -- 05FB40
20 20 20 20 20 20 20 20 20 20 20 20 00 66 32 2E -- 05FB50
20 20 65 7A 69 53 00 20 20 20 20 20 20 20 20 20 -- 05FB60
20 20 00 66 32 2E 36 25 20 66 32 2E 36 25 20 3A -- 05FB70
20 20 20 20 20 20 20 20 20 20 20 20 20 20 20 20 -- 05FB80
32 2E 36 25 20 3A 20 20 20 73 65 52 00 20 20 20 -- 05FB90
20 20 20 20 20 20 20 20 00 66 32 2E 36 25 20 66 -- 05FBA0
61 4E 00 20 20 20 20 20 20 20 20 20 20 20 20 20 -- 05FBB0
20 20 20 20 20 6D 6D 00 73 25 20 3A 20 20 65 6D -- 05FBC0
49 00 20 68 74 64 69 57 20 74 68 67 69 65 48 20 -- 05FBD0
69 57 20 74 68 67 69 65 48 20 20 20 20 68 63 6E -- 05FBE0
20 20 20 20 20 20 20 20 20 20 20 00 20 68 74 64 -- 05FBF0
7A 69 53 00 20 20 20 20 20 20 20 20 20 20 01 FE -- 05FC00
66 32 2E 36 25 20 66 32 2E 36 25 20 3A 20 20 65 -- 05FC10
20 20 20 20 20 20 20 20 20 20 20 20 20 20 20 00 -- 05FC20
25 20 3A 20 20 20 73 65 52 00 20 20 20 20 20 20 -- 05FC30
20 20 20 20 20 00 66 32 2E 36 25 20 66 32 2E 36 -- 05FC40
20 20 20 20 20 20 20 20 20 20 20 20 20 20 20 20 -- 05FC50
25 20 66 32 2E 36 25 20 3A 20 20 6D 6F 6F 5A 00 -- 05FC60
2E 36 25 20 3A 20 20 6D 6F 6F 5A 00 66 32 2E 36 -- 05FC70
20 20 20 20 20 20 20 00 66 34 2E 36 25 20 66 34 -- 05FC80
56 00 20 20 20 20 20 20 20 20 20 20 20 20 20 20 -- 05FC90
65 52 2E 4D 00 73 25 20 3A 6B 73 61 4D 20 61 69 -- 05FCA0
00 66 32 2E 36 25 20 66 32 2E 36 25 20 3A 20 73 -- 05FCB0
20 20 20 20 20 20 20 20 20 20 20 20 20 20 20 20 -- 05FCC0
20 20 20 20 20 20 20 20 20 20 00 20 20 20 20 20 -- 05FCD0
00 00 00 00 00 20 20 20 20 20 20 20 20 20 20 20 -- 05FCE0
00 00 00 00 00 00 00 00 00 00 00 00 00 00 00 00 -- 05FCF0
00 00 00 00 00 00 00 00 00 00 00 00 00 00 00 00 -- 05FD00
00 00 00 00 00 00 00 00 00 00 00 00 00 00 00 00 -- 05FD10
00 00 00 00 00 00 00 00 00 00 00 00 00 00 00 00 -- 05FD20
00 00 00 00 00 00 00 00 00 00 00 00 00 00 00 00 -- 05FD30
00 00 00 00 00 00 00 00 00 00 00 00 00 00 00 00 -- 05FD40
00 00 00 00 00 00 00 00 00 00 00 00 00 00 00 00 -- 05FD50

00 00 00 00 00 00 00 00 00 00 00 00 00 00 00 00 -- 05FD60
00 00 00 00 00 00 00 00 00 00 00 00 00 00 00 00 -- 05FD70
00 00 00 00 00 00 00 00 00 00 00 00 00 00 00 00 -- 05FD80
```

```
00  00  00  00  00  00  00  00  00  00  00  00  00  00  00  00  --  05FD90
00  00  00  00  00  00  00  00  00  00  00  00  00  00  00  00  --  05FDA0
00  00  00  00  00  00  00  00  00  00  00  00  00  00  00  00  --  05FDB0
00  00  00  00  00  00  00  00  00  00  00  00  00  00  00  00  --  05FDC0
00  00  00  00  00  00  00  00  00  00  00  00  00  00  00  00  --  05FDD0
00  00  00  00  00  00  00  00  00  00  00  00  00  00  00  00  --  05FDE0
00  00  00  00  00  00  00  00  00  00  00  00  00  00  00  00  --  05FDF0
00  00  00  00  00  00  00  00  00  00  00  00  00  00  01  FE  --  05FE00
4F  20  48  54  4F  4F  4D  53  6D  37  5B  63  25  63  25  0A  --  05FE10
49  54  41  43  4F  4C  4C  41  20  53  45  4E  49  4C  54  55  --  05FE20
25  00  0A  6D  30  5B  63  25  52  4F  52  52  45  20  4E  4F  --  05FE30
28  20  52  4F  52  52  45  20  4C  41  54  41  46  63  25  63  --  05FE40
55  42  20  45  4C  42  55  4F  44  20  4E  49  20  47  55  42  --  05FE50
54  4F  4F  4D  53  20  4E  49  20  47  4E  49  52  45  46  46  --  05FE60
4F  43  45  52  6D  37  5B  63  25  63  25  0A  00  0A  29  48  --  05FE70
54  4F  4F  4D  53  20  4D  4F  52  46  20  44  45  52  45  56  --  05FE80
30  5B  63  25  4E  4F  49  54  41  43  4F  4C  4C  41  20  48  --  05FE90
54  4F  4F  4D  53  6D  37  5B  63  25  63  25  0A  00  0A  6D  --  05FEA0
43  4F  4C  4C  41  20  53  45  4E  49  4C  54  55  4F  20  48  --  05FEB0
6D  30  5B  63  25  52  4F  52  52  45  20  4E  4F  49  54  41  --  05FEC0
4B  43  41  42  20  44  45  50  50  41  57  53  63  25  00  0A  --  05FED0
52  45  46  46  55  42  20  54  53  52  49  46  20  4F  54  20  --  05FEE0
4B  43  41  42  20  44  45  50  50  41  57  53  63  25  00  0A  --  05FEF0
52  45  46  46  55  42  20  54  53  52  49  46  20  4F  54  20  --  05FF00
53  20  4F  54  20  44  45  50  50  41  57  53  63  25  00  0A  --  05FF10
63  25  00  0A  52  45  46  46  55  42  20  44  4E  4F  43  45  --  05FF20
4E  4F  43  45  53  20  4F  54  20  44  45  50  50  41  57  53  --  05FF30
00  00  00  00  00  00  00  0A  52  45  46  46  55  42  20  44  --  05FF40
00  00  00  00  00  00  00  00  00  00  00  00  00  00  00  00  --  05FF50
00  00  00  00  00  00  00  00  00  00  00  00  00  00  00  00  --  05FF60
00  00  00  00  00  03  00  00  00  00  00  00  00  00  00  00  --  05FF70
00  00  00  00  00  00  00  00  00  00  00  00  00  00  00  00  --  05FF80
00  00  00  00  00  00  00  00  00  00  00  00  00  00  00  00  --  05FF90
00  00  00  00  00  00  00  00  00  00  00  00  00  00  00  00  --  05FFA0
00  00  00  00  00  00  00  00  00  00  00  00  00  00  00  00  --  05FFB0
00  00  00  00  00  00  00  00  00  00  00  00  00  00  00  00  --  05FFC0
00  00  00  00  00  00  00  00  00  00  00  00  00  00  00  00  --  05FFD0
00  00  00  00  00  00  00  00  00  00  00  00  00  00  00  00  --  05FFE0
00  00  00  00  00  00  00  00  00  00  00  00  00  00  00  00  --  05FFF0
00  00  00  00  00  00  00  00  00  00  00  00  00  00  01  FE  --  060000
00  00  00  00  00  00  00  00  00  00  00  00  00  00  00  00  --  060010
00  00  00  00  00  00  00  00  00  00  00  00  00  00  00  00  --  060020
00  00  00  00  00  00  00  00  00  00  00  00  00  00  00  00  --  060030
00  00  00  00  00  00  00  00  00  00  00  00  00  00  00  00  --  060040
00  00  00  00  00  00  00  00  00  00  00  00  00  00  00  00  --  060050
00  00  00  00  00  00  00  00  00  00  00  00  00  00  00  00  --  060060
00  00  00  00  00  00  00  00  00  00  00  00  00  00  00  00  --  060070
00  00  00  00  00  00  00  00  00  00  00  00  00  00  00  00  --  060080
00  00  00  00  00  00  00  00  00  00  00  00  00  00  00  00  --  060090
00  00  00  00  00  00  00  00  00  00  00  00  00  00  00  00  --  0600A0
00  00  00  00  00  00  00  00  00  00  00  00  00  00  00  00  --  0600B0
00  00  00  00  00  00  00  00  00  00  00  00  00  00  00  00  --  0600C0
00  00  00  00  00  00  00  00  00  00  00  00  00  00  00  00  --  0600D0
00  00  00  00  00  00  00  00  00  00  00  00  00  00  00  00  --  0600E0
00  00  00  00  00  00  00  00  00  00  00  00  00  00  00  00  --  0600F0

00  00  00  00  00  00  00  00  00  00  00  00  00  00  00  00  --  060100
00  00  00  00  00  00  00  00  00  00  00  00  00  00  00  00  --  060110
00  00  00  00  00  00  00  00  00  00  00  00  00  00  00  00  --  060120
00  00  00  00  00  00  00  00  00  00  00  00  00  00  00  00  --  060130
```

```
00 00 00 00 00 00 00 00 00 00 00 00 00 00 00 00 -- 060140
00 00 00 00 00 00 00 00 00 00 00 00 00 00 00 00 -- 060150
00 00 00 00 00 00 00 00 00 00 00 00 00 00 00 00 -- 060160
00 00 00 00 00 00 00 00 00 00 00 00 00 00 00 00 -- 060170
00 00 00 00 00 00 00 00 00 00 00 00 00 00 00 00 -- 060180
00 00 00 00 00 00 00 00 00 00 00 00 00 00 00 00 -- 060190
00 00 00 00 00 00 00 00 00 00 00 00 00 00 00 00 -- 0601A0
00 00 00 00 00 00 00 00 00 00 00 00 00 00 00 00 -- 0601B0
00 00 00 00 00 00 00 00 00 00 00 00 00 00 00 00 -- 0601C0
00 00 00 00 00 00 00 00 00 00 00 00 00 00 00 00 -- 0601D0
00 00 00 00 00 00 00 00 00 00 00 00 00 00 00 00 -- 0601E0
00 00 00 00 00 00 00 00 00 00 00 00 00 00 00 00 -- 0601F0
00 00 00 00 00 00 00 00 00 00 00 00 00 00 01 FE -- 060200
00 00 00 00 00 00 00 00 00 00 00 00 00 00 00 00 -- 060210
00 00 00 00 00 00 00 00 00 00 00 00 00 00 00 00 -- 060220
00 00 00 00 00 00 00 00 00 00 00 00 00 00 00 00 -- 060230
00 00 00 00 00 00 00 00 00 00 00 00 00 00 00 00 -- 060240
00 00 00 00 00 00 00 00 00 00 00 00 00 00 00 00 -- 060250
00 00 00 00 00 00 00 00 00 00 00 00 00 00 00 00 -- 060260
00 00 00 00 00 00 00 00 00 00 00 00 00 00 00 00 -- 060270
00 00 00 00 00 00 00 00 00 00 00 00 00 00 00 00 -- 060280
00 00 00 00 00 00 00 00 00 00 00 00 00 00 00 00 -- 060290
00 00 00 00 00 00 00 00 00 00 00 00 00 00 00 00 -- 0602A0
00 00 00 00 00 00 00 00 00 00 00 00 00 00 00 00 -- 0602B0
00 00 00 00 00 00 00 00 00 00 00 00 00 00 00 00 -- 0602C0
00 00 00 00 00 00 00 00 00 00 00 00 00 00 00 00 -- 0602D0
00 00 00 00 00 00 00 00 00 00 00 00 00 00 00 00 -- 0602E0
00 00 00 00 00 00 00 00 00 00 00 00 00 00 00 00 -- 0602F0
74 68 67 69 65 48 20 20 20 20 20 20 6D 6D 00 00 -- 060300
20 20 20 20 68 63 6E 49 00 20 68 74 64 69 57 20 -- 060310
20 20 00 20 68 74 64 69 57 20 74 68 67 69 65 48 -- 060320
20 20 20 20 20 20 20 20 20 20 20 20 20 20 20 20 -- 060330
32 2E 36 25 20 3A 20 20 65 7A 69 53 00 20 20 20 -- 060340
20 20 20 20 20 20 20 20 00 66 32 2E 36 25 20 66 -- 060350
65 52 00 20 20 20 20 20 20 20 20 20 20 20 20 20 -- 060360
32 2E 36 25 20 66 32 2E 36 25 20 3A 20 20 20 73 -- 060370
74 68 67 69 65 48 20 20 20 20 20 20 6D 6D 00 66 -- 060380
20 20 20 20 68 63 6E 49 00 20 68 74 64 69 57 20 -- 060390
20 20 00 20 68 74 64 69 57 20 74 68 67 69 65 48 -- 0603A0
20 20 20 20 20 20 20 20 20 20 20 20 20 20 20 20 -- 0603B0
32 2E 36 25 20 3A 20 20 65 7A 69 53 00 20 20 20 -- 0603C0
20 20 20 20 20 20 20 20 00 66 32 2E 36 25 20 66 -- 0603D0
65 52 00 20 20 20 20 20 20 20 20 20 20 20 20 20 -- 0603E0
32 2E 36 25 20 66 32 2E 36 25 20 3A 20 20 20 73 -- 0603F0
20 20 20 20 20 20 20 20 20 20 20 20 00 66 01 FE -- 060400
20 20 6D 6F 6F 5A 00 20 20 20 20 20 20 20 20 20 -- 060410
6F 5A 00 66 32 2E 36 25 20 66 32 2E 36 25 20 3A -- 060420
34 2E 36 25 20 66 34 2E 36 25 20 3A 20 20 6D 6F -- 060430
20 20 20 20 20 20 20 20 20 20 20 20 20 00 66 6F -- 060440
20 3A 20 20 6D 6F 6F 5A 00 20 20 20 20 20 20 20 -- 060450
6D 6F 6F 5A 00 66 32 2E 36 25 20 66 32 2E 36 25 -- 060460
00 66 34 2E 36 25 20 66 34 2E 36 25 20 3A 20 20 -- 060470
20 20 20 20 20 20 20 20 20 20 20 20 20 20 20 20 -- 060480
20 3A 6B 73 61 4D 20 61 69 56 00 20 20 20 20 20 -- 060490

00 73 25 20 3A 6B 73 61 4D 20 61 69 56 00 73 25 -- 0604A0
20 6B 73 61 4D 00 73 25 20 3A 20 20 6B 73 61 4D -- 0604B0
20 20 20 20 20 20 20 20 20 20 00 73 25 20 3A 20 -- 0604C0
65 52 2E 4D 00 20 20 20 20 20 20 20 20 20 20 20 -- 0604D0
00 66 32 2E 36 25 20 66 32 2E 36 25 20 3A 20 73 -- 0604E0
```

```
36 25 20 66 32 2E 36 25 20 3A 20 73 65 52 2E 4D -- 0604F0
32 2E 36 25 20 3A 20 73 65 52 2E 4D 00 66 32 2E -- 060500
20 3A 20 73 65 52 2E 4D 00 66 32 2E 36 25 20 66 -- 060510
20 20 20 20 00 66 32 2E 36 25 20 66 32 2E 36 25 -- 060520
20 20 20 20 20 20 20 20 20 20 20 20 20 20 20 20 -- 060530
56 00 73 25 20 3A 6B 73 61 4D 20 61 69 56 00 20 -- 060540
6B 73 61 4D 00 73 25 20 3A 6B 73 61 4D 20 61 69 -- 060550
25 20 3A 20 20 6B 73 61 4D 00 73 25 20 3A 20 20 -- 060560
20 20 20 20 20 20 20 20 20 20 20 20 20 00 73 -- 060570
20 3A 20 73 65 52 2E 4D 00 20 20 20 20 20 20 20 -- 060580
20 20 20 20 00 66 32 2E 36 25 20 66 32 2E 36 25 -- 060590
20 20 20 20 20 20 20 20 20 20 20 20 20 20 20 20 -- 0605A0
20 20 20 20 20 20 20 20 20 20 20 20 20 20 00 20 -- 0605B0
20 20 20 20 20 20 20 20 00 20 20 20 20 20 20 20 -- 0605C0
20 20 00 20 20 20 20 20 20 20 20 20 20 20 20 20 -- 0605D0
20 20 20 20 20 20 20 20 20 20 20 20 20 20 20 20 -- 0605E0
00 00 00 00 00 00 00 00 00 00 00 00 00 20 20 20 -- 0605F0
00 00 00 00 00 00 00 00 00 00 00 00 00 00 01 FE -- 060600
00 00 00 00 00 00 00 00 00 00 00 00 00 00 00 -- 060610
00 00 00 00 00 00 00 00 00 00 00 00 00 00 00 -- 060620
00 00 00 00 00 00 00 00 00 00 00 00 00 00 00 -- 060630
00 00 00 00 00 00 00 00 00 00 00 00 00 00 00 -- 060640
00 00 00 00 00 00 00 00 00 00 00 00 00 00 00 -- 060650
00 00 00 00 00 00 00 00 00 00 00 00 00 00 00 -- 060660
00 00 00 00 00 00 00 00 00 00 00 00 00 00 00 -- 060670
00 00 00 00 00 00 00 00 00 00 00 00 00 00 00 -- 060680
00 00 00 00 00 00 00 00 00 00 00 00 00 00 00 -- 060690
00 00 00 00 00 00 00 00 00 00 00 00 00 00 00 -- 0606A0
00 00 00 00 00 00 00 00 00 00 00 00 00 00 00 -- 0606B0
00 00 00 00 00 00 00 00 00 00 00 00 00 00 00 -- 0606C0
00 00 00 00 00 00 00 00 00 00 00 00 00 00 00 -- 0606D0
00 00 00 00 00 00 00 00 00 00 00 00 00 00 00 -- 0606E0
00 00 00 00 00 00 00 00 00 00 00 00 00 00 00 -- 0606F0
00 00 00 00 00 00 00 00 00 00 00 00 00 00 00 -- 060700
00 00 00 00 00 00 00 00 00 00 00 00 00 00 00 -- 060710
00 00 00 00 00 00 00 00 00 00 00 00 00 00 00 -- 060720
00 00 00 00 00 00 00 00 00 00 00 00 00 00 00 -- 060730
00 00 00 00 00 00 00 00 00 00 00 00 00 00 00 -- 060740
00 00 00 00 00 00 00 00 00 00 00 00 00 00 00 -- 060750
00 00 00 00 00 00 00 00 00 00 00 00 00 00 00 -- 060760
00 00 00 00 00 00 00 00 00 00 00 00 00 00 00 -- 060770
00 00 00 00 00 00 00 00 00 00 00 00 00 00 00 -- 060780
00 00 00 00 00 00 00 00 00 00 00 00 00 00 00 -- 060790
00 00 00 00 00 00 00 00 00 00 00 00 00 00 00 -- 0607A0
00 00 00 00 00 00 00 00 00 00 00 00 00 00 00 -- 0607B0
00 00 00 00 00 00 00 00 00 00 00 00 00 00 00 -- 0607C0
00 00 00 00 00 00 00 00 00 00 00 00 00 00 00 -- 0607D0
00 00 00 00 00 00 00 00 00 00 00 00 00 00 00 -- 0607E0
00 00 00 00 00 00 00 00 00 00 00 00 00 00 00 -- 0607F0
00 00 00 00 00 00 00 00 00 00 00 00 00 01 FE -- 060800
00 00 00 00 00 00 00 00 00 00 00 00 00 00 00 -- 060810
00 00 00 00 00 00 00 00 00 00 00 00 00 00 00 -- 060820
00 00 00 00 00 00 00 00 00 00 00 00 00 00 00 -- 060830
00 00 00 00 00 00 00 00 00 00 00 00 00 00 00 -- 060840
00 00 00 00 00 00 00 00 00 00 00 00 00 00 00 -- 060850
00 00 00 00 00 00 00 00 00 00 00 00 00 00 00 -- 060860
00 00 00 00 00 00 00 00 00 00 00 00 00 00 00 -- 060870
00 00 00 00 00 00 00 00 00 00 00 00 00 00 00 -- 060880
00 00 00 00 00 00 00 00 00 00 00 00 00 00 00 -- 060890
```

```
00  00  00  00  00  00  00  00  00  00  00  00  00  00  00  00  --  0608A0
00  00  00  00  00  00  00  00  00  00  00  00  00  00  00  00  --  0608B0
00  00  00  00  00  00  00  00  00  00  00  00  00  00  00  00  --  0608C0
00  00  00  00  00  00  00  00  00  00  00  00  00  00  00  00  --  0608D0
00  00  00  00  00  00  00  00  00  00  00  00  00  00  00  00  --  0608E0
00  00  00  00  00  00  00  00  00  00  00  00  00  00  00  00  --  0608F0
00  00  00  00  00  00  00  00  00  00  00  00  00  00  00  00  --  060900
00  00  00  00  00  00  00  00  00  00  00  00  00  00  00  00  --  060910
00  00  00  00  00  00  00  00  00  00  00  00  00  00  00  00  --  060920
00  00  00  00  00  00  00  00  00  00  00  00  00  00  00  00  --  060930
00  00  00  00  00  00  00  00  00  00  00  00  00  00  00  00  --  060940
00  00  00  00  00  00  00  00  00  00  00  00  00  00  00  00  --  060950
00  00  00  00  00  00  00  00  00  00  00  00  00  00  00  00  --  060960
00  00  00  00  00  00  00  00  00  00  00  00  00  00  00  00  --  060970
00  00  00  00  00  00  00  00  00  00  00  00  00  00  00  00  --  060980
00  00  00  00  00  00  00  00  00  00  00  00  00  00  00  00  --  060990
00  00  00  00  00  00  00  00  00  00  00  00  00  00  00  00  --  0609A0
00  00  00  00  00  00  00  00  00  00  00  00  00  00  00  00  --  0609B0
00  00  00  00  00  00  00  00  00  00  00  00  00  00  00  00  --  0609C0
00  00  00  00  00  00  00  00  00  00  00  00  00  00  00  00  --  0609D0
00  00  00  00  00  00  00  00  00  00  00  00  00  00  00  00  --  0609E0
00  00  00  00  00  00  00  00  00  00  00  00  00  00  00  00  --  0609F0
00  00  00  00  00  00  00  00  00  00  00  00  00  00  01  FE  --  060A00
00  00  00  00  00  00  00  00  00  00  00  00  00  00  00  00  --  060A10
00  00  00  00  00  00  00  00  00  00  00  00  00  00  00  00  --  060A20
00  00  00  00  00  00  00  00  00  00  00  00  00  00  00  00  --  060A30
00  00  00  00  00  00  00  00  00  00  00  00  00  00  00  00  --  060A40
00  00  00  00  00  00  00  00  00  00  00  00  00  00  00  00  --  060A50
00  00  00  00  00  00  00  00  00  00  00  00  00  00  00  00  --  060A60
00  00  00  00  00  00  00  00  00  00  00  00  00  00  00  00  --  060A70
00  00  00  00  00  00  00  00  00  00  00  00  00  00  00  00  --  060A80
00  00  00  00  00  00  00  00  00  00  00  00  00  00  00  00  --  060A90
00  00  00  00  00  00  00  00  00  00  00  00  00  00  00  00  --  060AA0
00  00  00  00  00  00  00  00  00  00  00  00  00  00  00  00  --  060AB0
00  00  00  00  00  00  00  00  00  00  00  00  00  00  00  00  --  060AC0
00  00  00  00  00  00  00  00  00  00  00  00  00  00  00  00  --  060AD0
00  00  00  00  00  00  00  00  00  00  00  00  00  00  00  00  --  060AE0
00  00  00  00  00  00  00  00  00  00  00  00  00  00  00  00  --  060AF0
00  00  00  00  00  00  00  00  00  00  00  00  00  00  00  00  --  060B00
00  00  00  00  00  00  00  00  00  00  00  00  00  00  00  00  --  060B10
00  00  00  00  00  00  00  00  00  00  00  00  00  00  00  00  --  060B20
00  00  00  00  00  00  00  00  00  00  00  00  00  00  00  00  --  060B30
00  00  00  00  00  00  00  00  00  00  00  00  00  00  00  00  --  060B40
00  00  00  00  00  00  00  00  00  00  00  00  00  00  00  00  --  060B50
00  00  00  00  00  00  00  00  00  00  00  00  00  00  00  00  --  060B60
00  00  00  00  00  00  00  00  00  00  00  00  00  00  00  00  --  060B70
00  00  00  00  00  00  00  00  00  00  00  00  00  00  00  00  --  060B80
00  00  00  00  00  00  00  00  00  00  00  00  00  00  00  00  --  060B90
00  00  00  00  00  00  00  00  00  00  00  00  00  00  00  00  --  060BA0
00  00  00  00  00  00  00  00  00  00  00  00  00  00  00  00  --  060BB0
00  00  00  00  00  00  00  00  00  00  00  00  00  00  00  00  --  060BC0
00  00  00  00  00  00  00  00  00  00  00  00  00  00  00  00  --  060BD0
00  00  00  00  00  00  00  00  00  00  00  00  00  00  00  00  --  060BE0
00  00  00  00  00  00  00  00  00  00  00  00  00  00  00  00  --  060BF0
00  00  00  00  00  00  00  00  00  00  00  00  00  00  01  FE  --  060C00
00  00  00  00  00  00  00  00  00  00  00  00  00  00  00  00  --  060C10
00  00  00  00  00  00  00  00  00  00  00  00  00  00  00  00  --  060C20
00  00  00  00  00  00  00  00  00  00  00  00  00  00  00  00  --  060C30
00  00  00  00  00  01  00  00  00  00  00  00  00  00  00  00  --  060C40
```

```
00  00  00  00  00  00  00  00  00  00  00  00  00  00  00  00  --  060C50
00  00  00  00  00  00  00  00  00  00  00  00  00  00  00  00  --  060C60
00  00  00  00  00  00  00  00  00  00  00  00  00  00  00  00  --  060C70
00  00  00  00  00  00  00  00  00  00  00  00  00  00  00  00  --  060C80
00  00  00  00  00  00  00  00  00  00  00  00  00  00  00  00  --  060C90
00  00  00  00  00  00  00  00  00  00  00  00  00  00  00  00  --  060CA0
00  00  00  00  00  00  00  00  00  00  00  00  00  00  00  00  --  060CB0
00  00  00  00  00  00  00  00  00  00  00  00  00  00  00  00  --  060CC0
00  00  00  00  00  00  00  00  00  00  00  00  00  00  00  00  --  060CD0
00  00  00  00  00  00  00  00  00  00  00  00  00  00  00  00  --  060CE0
00  00  00  00  00  00  00  00  00  00  00  00  00  00  00  00  --  060CF0
00  00  00  00  00  00  00  00  00  00  00  00  00  00  00  00  --  060D00
00  00  00  00  00  00  00  00  00  00  00  00  00  00  00  00  --  060D10
00  00  00  00  00  00  00  00  00  00  00  00  00  00  00  00  --  060D20
00  00  00  00  00  00  00  00  00  00  00  00  00  00  00  00  --  060D30
00  00  00  00  00  00  00  00  00  00  00  00  00  00  00  00  --  060D40
00  00  00  00  00  00  00  00  00  00  00  00  00  00  00  00  --  060D50
00  00  00  00  00  00  00  00  00  00  00  00  00  00  00  00  --  060D60
00  00  00  00  00  00  00  00  00  00  00  00  00  00  00  00  --  060D70
00  00  00  00  00  00  00  00  00  00  00  00  00  00  00  00  --  060D80
00  00  00  00  00  00  00  00  00  00  00  00  00  00  00  00  --  060D90
00  00  00  00  00  00  00  00  00  00  00  00  00  00  00  00  --  060DA0
00  00  00  00  00  00  00  00  00  00  00  00  00  00  00  00  --  060DB0
00  00  00  00  00  00  00  00  00  00  00  00  00  00  00  00  --  060DC0
00  00  00  00  00  00  00  00  00  00  00  00  00  00  00  00  --  060DD0
00  00  00  00  00  00  00  00  00  00  00  00  00  00  00  00  --  060DE0
00  00  00  00  00  00  00  00  00  00  00  00  00  00  00  00  --  060DF0
00  00  00  00  00  00  00  00  00  00  00  00  00  00  01  FE  --  060E00
00  00  00  00  00  00  00  00  00  00  00  00  00  00  00  00  --  060E10
00  00  00  00  00  00  00  00  00  00  00  00  00  00  00  00  --  060E20
00  00  00  00  00  00  00  00  00  00  00  00  00  00  00  00  --  060E30
00  00  00  00  00  00  00  00  00  00  00  00  00  00  00  00  --  060E40
00  00  00  00  00  00  00  00  00  00  00  00  00  00  00  00  --  060E50
00  00  00  00  00  00  00  00  00  00  00  00  00  00  00  00  --  060E60
00  00  00  00  00  00  00  00  00  00  00  00  00  00  00  00  --  060E70
00  00  00  00  00  00  00  00  00  00  00  00  00  00  00  00  --  060E80
00  00  00  00  00  00  00  00  00  00  00  00  00  00  00  00  --  060E90
00  00  00  00  00  00  00  00  00  00  00  00  00  00  00  00  --  060EA0
00  00  00  00  00  00  00  00  00  00  00  00  00  00  00  00  --  060EB0
00  00  00  00  00  00  00  00  00  00  00  00  00  00  00  00  --  060EC0
00  00  00  00  00  00  00  00  00  00  00  00  00  00  00  00  --  060ED0
00  00  00  00  00  00  00  00  00  00  00  00  00  00  00  00  --  060EE0
00  00  00  00  00  00  00  00  00  00  00  00  00  00  00  00  --  060EF0
00  00  00  00  00  00  00  00  00  00  00  00  00  00  00  00  --  060F00
00  00  00  00  00  00  00  00  00  00  00  00  00  00  00  00  --  060F10
00  00  00  00  00  00  00  00  00  00  00  00  00  00  00  00  --  060F20
00  00  00  00  00  00  00  00  00  00  00  00  00  00  00  00  --  060F30
00  00  00  00  00  00  00  00  00  00  00  00  00  00  00  00  --  060F40
00  00  00  00  00  00  00  00  00  00  00  00  00  00  00  00  --  060F50
00  00  00  00  00  00  00  00  00  00  00  00  00  00  00  00  --  060F60
00  00  00  00  00  00  00  00  00  00  00  00  00  00  00  00  --  060F70

00  00  00  00  00  00  00  00  00  00  00  00  00  00  00  00  --  060F80
00  00  00  00  00  00  00  00  00  00  00  00  00  00  00  00  --  060F90
00  00  00  00  00  00  00  00  00  00  00  00  00  00  00  00  --  060FA0
00  00  00  00  00  00  00  00  00  00  00  00  00  00  00  00  --  060FB0
00  00  00  00  00  00  00  00  00  00  00  00  00  00  00  00  --  060FC0
00  00  00  00  00  00  00  00  00  00  00  00  00  00  00  00  --  060FD0
00  00  00  00  00  00  00  00  00  00  00  00  00  00  00  00  --  060FE0
00  00  00  00  00  00  00  00  00  00  00  00  00  00  00  00  --  060FF0
```

```
00  00  00  00  00  00  00  00  00  00  00  00  00  00  01  FE  --  061000
00  00  00  00  00  00  00  00  00  00  00  00  00  00  00  00  --  061010
00  00  00  00  00  00  00  00  00  00  00  00  00  00  00  00  --  061020
00  00  00  00  00  00  00  00  00  00  00  00  00  00  00  00  --  061030
00  00  00  00  00  00  00  00  00  00  00  00  00  00  00  00  --  061040
00  00  00  00  00  00  00  00  00  00  00  00  00  00  00  00  --  061050
00  00  00  00  00  00  00  00  00  00  00  00  00  00  00  00  --  061060
00  00  00  00  00  00  00  00  00  00  00  00  00  00  00  00  --  061070
00  02  00  00  00  00  00  00  00  00  00  00  00  00  00  00  --  061080
00  00  00  00  00  00  00  00  00  00  00  00  00  00  00  01  --  061090
00  00  00  00  00  00  00  00  00  00  00  00  00  00  00  00  --  0610A0
00  00  00  00  00  00  00  00  00  00  00  00  00  00  00  00  --  0610B0
00  00  00  00  00  00  00  00  00  00  00  00  00  00  00  00  --  0610C0
00  00  00  00  00  00  00  00  00  00  00  00  00  00  00  00  --  0610D0
00  00  00  00  00  00  00  00  00  00  00  00  00  00  00  00  --  0610E0
00  00  00  00  00  00  00  00  00  00  00  00  00  00  00  00  --  0610F0
00  00  00  00  00  00  00  00  00  00  00  00  00  00  00  00  --  061100
00  00  00  00  00  00  00  00  00  00  00  00  00  00  00  00  --  061110
00  00  00  00  00  00  00  00  00  00  00  00  00  00  00  00  --  061120
00  00  00  00  00  00  00  00  00  00  00  00  00  00  00  00  --  061130
00  00  00  00  00  00  00  00  00  00  00  00  00  00  00  00  --  061140
00  00  00  00  00  00  00  00  00  00  00  00  00  00  00  00  --  061150
00  00  00  00  00  00  00  00  00  00  00  00  00  00  00  00  --  061160
00  00  00  00  00  00  00  00  00  00  00  00  00  00  00  00  --  061170
00  00  00  00  00  00  00  00  00  00  00  00  00  00  00  00  --  061180
00  00  00  00  00  00  00  00  00  00  00  00  00  00  00  00  --  061190
00  00  00  00  00  00  00  00  00  00  00  00  00  00  00  00  --  0611A0
00  00  00  00  00  00  00  00  00  00  00  00  00  00  00  00  --  0611B0
00  00  00  00  00  00  00  00  00  00  00  00  00  00  00  00  --  0611C0
00  00  00  00  00  00  00  00  00  00  00  00  00  00  00  00  --  0611D0
00  00  00  00  00  00  00  00  00  00  00  00  00  00  00  00  --  0611E0
00  00  00  00  00  00  00  00  00  00  00  00  00  00  00  00  --  0611F0
00  05  00  00  00  00  00  00  00  00  00  00  00  00  01  FE  --  061200
2E  00  00  FA  46  C7  00  00  06  C8  57  56  00  00  00  00  --  061210
4C  17  0B  9A  50  09  75  00  01  3D  05  8B  23  A0  3E  C5  --  061220
7E  83  FE  46  89  05  8B  23  A4  3E  C5  2E  02  C4  83  00  --  061230
08  75  00  03  3D  05  8B  23  A8  3E  C5  2E  0C  74  03  FE  --  061240
3E  C5  2E  00  44  01  9F  9A  01  08  E9  00  44  03  8D  9A  --  061250
04  3D  05  8B  23  A8  3E  C5  2E  0F  75  00  3D  83  23  AC  --  061260
23  B0  3E  C5  2E  00  54  C8  1C  9A  00  EA  E9  03  74  00  --  061270
2E  11  75  00  3D  83  23  B4  3E  C5  2E  1B  74  00  3D  83  --  061280
02  EB  00  01  B8  05  74  00  06  3D  05  8B  23  B8  3E  C5  --  061290
50  FC  46  89  00  01  B8  1E  74  C0  0B  FC  46  89  C0  2B  --  0612A0
00  3D  83  23  BC  3E  C5  2E  02  C4  83  00  4C  C3  85  9A  --  0612B0
54  C8  1C  9A  00  44  03  8D  9A  00  34  BC  65  9A  05  74  --  0612C0
B8  50  FA  46  8D  16  00  86  E9  03  75  00  FC  7E  83  00  --  0612D0
9A  01  91  68  03  6A  50  05  89  23  A4  3E  C5  2E  00  02  --  0612E0
85  9A  50  FC  46  89  00  02  B8  0A  C4  83  00  64  40  D0  --  0612F0
50  74  00  3D  83  23  BC  3E  C5  2E  02  C4  83  00  4C  C3  --  061300
00  64  40  D0  9A  6F  6A  03  6A  16  6A  50  FA  46  8D  16  --  061310

00  3D  83  23  C0  3E  C5  2E  00  34  BC  BC  9A  0A  C4  83  --  061320
8D  16  22  EB  00  54  C8  1C  9A  00  44  5F  EB  9A  0C  74  --  061330
FF  2E  00  6A  16  6A  35  FF  23  C8  3E  C5  2E  50  FA  46  --  061340
0E  C4  83  00  4C  10  41  9A  23  C4  36  FF  2E  23  C6  36  --  061350
00  03  3D  05  8B  23  A4  3E  C5  2E  25  74  03  FE  7E  83  --  061360
03  6A  02  6A  50  FA  46  8D  16  00  54  C8  1C  9A  05  75  --  061370
C5  2E  FE  46  8B  0A  C4  83  00  64  40  D0  9A  01  91  68  --  061380
75  00  01  3D  05  8B  23  A0  3E  C5  2E  05  89  23  A4  3E  --  061390
C9  00  44  23  6F  9A  02  C4  83  00  4C  17  56  9A  50  09  --  0613A0
```

432

```
8D 16 00 00 FA 46 C7 00 00 06 C8 57 56 CB 5E 5F -- 0613B0
03 6A 50 05 89 23 A4 3E C5 2E 00 02 B8 50 FA 46 -- 0613C0
00 54 EA 6E 9A 0A C4 83 00 64 40 D0 9A 01 91 68 -- 0613D0
CC 3E C5 2E 00 54 F0 94 9A 05 74 C0 0B FC 46 89 -- 0613E0
36 FF 2E 23 D6 36 FF 2E 48 75 00 01 3D 05 8B 23 -- 0613F0
1D 9A 23 D0 36 FF 2E 23 D2 36 FF 2E 23 D4 01 FE -- 061400
36 FF 2E 23 DE 36 FF 2E 10 6A 08 C4 83 00 34 DE -- 061410
D8 06 03 2E 04 E0 C1 05 8B 23 D0 3E C5 2E 23 DC -- 061420
0A C4 83 00 5C ED 6E 9A 50 52 23 DA 16 8B 2E 23 -- 061430
FF 2E 1C 75 FF FF 3D 05 8B 23 CC 3E C5 2E 28 EB -- 061440
36 FF 2E 23 D2 36 FF 2E 23 D4 36 FF 2E 23 D6 36 -- 061450
83 23 B0 3E C5 2E 08 C4 83 00 34 DE 41 9A 23 D0 -- 061460
23 D0 3E C5 2E 35 FF 23 AC 3E C5 2E 28 74 00 3D -- 061470
52 23 DA 16 8B 2E 23 D8 06 03 2E 04 E0 C1 05 8B -- 061480
E0 36 C4 2E 00 8D E9 06 C4 83 00 34 C2 24 9A 50 -- 061490
02 EB 00 01 B8 05 75 00 3D 83 23 C0 3E C5 2E 23 -- 0614A0
23 C6 36 FF 2E 50 01 6A FE 46 89 2C F7 26 C0 2B -- 0614B0
2E 00 6A 08 C4 83 00 4C 11 96 9A 23 C4 36 FF 2E -- 0614C0
05 8B 23 D0 3E C5 2E 23 E4 36 FF 2E 23 E6 36 FF -- 0614D0
2E 50 52 23 DA 16 8B 2E 23 D8 06 03 2E 04 E0 C1 -- 0614E0
C4 83 00 34 E2 22 9A 23 C4 36 FF 2E 23 C6 36 FF -- 0614F0
23 D0 3E C5 2E 23 E8 36 FF 2E 23 EA 36 FF 2E 0E -- 061500
52 23 DA 16 8B 2E 23 D8 06 03 2E 04 E0 C1 05 8B -- 061510
05 8B 23 A0 3E C5 2E 08 C4 83 00 34 F3 63 9A 50 -- 061520
C5 2E 02 C4 83 00 4C 17 0B 9A 50 09 74 00 01 3D -- 061530
01 3D 05 8B 23 F0 3E C5 2E 00 00 05 C7 23 EC 3E -- 061540
2E 23 F8 36 FF 2E 23 FA 36 FF 2E 00 6A 27 75 00 -- 061550
C4 83 00 5C 94 FB 9A 23 F4 36 FF 2E 23 F6 36 FF -- 061560
83 00 44 74 F1 9A 00 00 05 C7 23 F0 3E C5 2E 0A -- 061570
8B 23 A0 3E C5 2E 00 54 EA 36 9A 05 74 00 FC 7E -- 061580
C9 02 C4 83 00 4C 17 56 9A 50 09 74 00 01 3D 05 -- 061590
8D 16 00 00 F4 46 C7 00 00 0E C8 57 56 CB 5E 5F -- 0615A0
03 6A 50 05 89 23 A4 3E C5 2E 00 03 B8 50 F4 46 -- 0615B0
00 54 EA 6E 9A 0A C4 83 00 64 40 D0 9A 01 91 68 -- 0615C0
FC 3E C5 2E 00 54 F0 94 9A 05 74 C0 0B FC 46 89 -- 0615D0
36 FF 2E 24 06 36 FF 2E 48 75 00 01 3D 05 8B 23 -- 0615E0
34 DE 1D 9A 24 00 36 FF 2E 24 02 36 FF 2E 24 04 -- 0615F0
36 FF 2E 24 0E 36 FF 2E 10 6A 08 C4 83 00 01 FE -- 061800
08 06 03 2E 04 E0 C1 05 8B 24 00 3E C5 2E 24 0C -- 061610
0A C4 83 00 5C ED 6E 9A 50 52 24 0A 16 8B 2E 24 -- 061620
FF 2E 1C 75 FF FF 3D 05 8B 23 FC 3E C5 2E 28 EB -- 061630
36 FF 2E 24 02 36 FF 2E 24 04 36 FF 2E 24 06 36 -- 061640
83 23 B0 3E C5 2E 08 C4 83 00 34 DE 41 9A 24 00 -- 061650
05 75 00 03 3D 05 8B 23 A8 3E C5 2E 38 74 00 3D -- 061660
24 00 3E C5 2E 50 FA 46 89 C0 2B 02 EB 00 01 B8 -- 061670
52 24 0A 16 8B 2E 24 08 06 03 2E 04 E0 C1 05 8B -- 061680
10 36 C4 2E 00 AC E9 06 C4 83 00 34 C3 68 9A 50 -- 061690
02 EB 00 01 B8 05 75 00 3D 83 23 BC 3E C5 2E 24 -- 0616A0
24 16 36 FF 2E 50 01 6A FE 46 89 2C F7 26 C0 2B -- 0616B0

2E 00 6A 08 C4 83 00 4C 11 96 9A 24 14 36 FF 2E -- 0616C0
05 8B 24 00 3E C5 2E 24 18 36 FF 2E 24 1A 36 FF -- 0616D0
2E 50 52 24 0A 16 8B 2E 24 08 06 03 2E 04 E0 C1 -- 0616E0
C4 83 00 34 E2 22 9A 24 14 36 FF 2E 24 16 36 FF -- 0616F0
24 00 3E C5 2E 24 1C 36 FF 2E 24 1E 36 FF 2E 0E -- 061700
52 24 0A 16 8B 2E 24 08 06 03 2E 04 E0 C1 05 8B -- 061710
3D 83 24 20 3E C5 2E 08 C4 83 00 34 F3 63 9A 50 -- 061720
50 F8 46 89 C0 2B 50 F6 46 89 00 01 B8 15 74 00 -- 061730
83 00 44 77 0B 9A 01 6A 04 C4 83 00 44 19 4B 9A -- 061740
B0 3E C5 2E 61 74 00 3D 83 24 20 3E C5 2E 02 C4 -- 061750
```

433

```
50 F4 46 8D 16 00 54 C8 1C 9A 57 74 00 3D 83 23 -- 061760
C5 24 2C 3E C5 2E 35 FF 02 75 FF 24 30 3E C5 2E -- 061770
C5 2E 24 28 36 FF 2E 24 2A 36 FF 2E 02 75 FF 3D -- 061780
2E 50 F2 46 89 00 03 B8 35 FF 02 75 FF 24 24 3E -- 061790
8B 2E 24 08 06 03 2E 04 E0 C1 05 8B 24 00 3E C5 -- 0617A0
FC 7E 83 18 C4 83 00 64 1C B4 9A 50 52 24 0A 16 -- 0617B0
02 C8 57 56 CB 5E 5F C9 00 54 EA 36 9A 05 74 00 -- 0617C0
D8 06 03 2E 04 E0 C1 05 8B 23 D0 3E C5 2E 00 00 -- 0617D0
F2 9A 0A 76 FF 0C 76 FF 50 52 23 DA 16 8B 2E 23 -- 0617E0
83 24 34 36 C5 2E 17 74 C0 0B 08 C4 83 00 4C 0B -- 0617F0
8E C7 69 FF 2B 02 EB 00 01 BF 05 75 00 3C 01 FE -- 061800
0C 76 FF 24 38 36 FF 2E 24 3A 36 FF 2E 4B EB 12 -- 061810
7E 83 FE 46 89 08 C4 83 00 4C 09 D6 9A 0A 76 FF -- 061820
FF 10 6A 00 01 05 C7 23 CC 3E C5 2E 27 74 00 FE -- 061830
9A 23 DC 36 FF 2E 23 DE 36 FF 2E 0A 76 FF 0C 76 -- 061840
5F C9 12 8E B8 03 EB C0 2B 0A C4 83 00 5C ED 6E -- 061850
3E C5 2E 00 00 FC 46 C7 00 00 04 C8 57 56 CB 5E -- 061860
0A 16 8B 2E 24 08 06 03 2E 04 E0 C1 05 8B 24 00 -- 061870
C4 83 00 4C 0B F2 9A 0A 76 FF 0C 76 FF 50 52 24 -- 061880
FF 24 3C 36 FF 2E 24 3E 36 FF 2E 48 75 C0 0B 08 -- 061890
FE 46 89 08 C4 83 00 4C 09 D6 9A 0A 76 FF 0C 76 -- 0618A0
6A 00 01 05 C7 23 FC 3E C5 2E 27 74 00 FE 7E 83 -- 0618B0
0C 36 FF 2E 24 0E 36 FF 2E 0A 76 FF 0C 76 FF 10 -- 0618C0
12 8E B8 03 EB C0 2B 0A C4 83 00 5C ED 6E 9A 24 -- 0618D0
3D 83 23 B0 3E C5 2E EC 8B 55 57 56 CB 5E 5F C9 -- 0618E0
C4 83 00 44 07 A0 9A 0A 76 FF 0C 76 FF 11 74 00 -- 0618F0
20 75 00 02 3D 05 8B 23 A4 3E C5 2E 00 B2 E9 04 -- 061900
8F 05 C7 0A 7E C5 0A 7F 00 3D 83 23 D4 3E C5 2E -- 061910
00 86 E9 FF FF 05 C7 23 CC 3E C5 2E 00 92 E9 12 -- 061920
04 3E C5 2E 11 75 00 03 3D 05 8B 23 A4 3E C5 2E -- 061930
3E C5 2E DC EB 23 FC 3E C5 2E D4 7E 00 3D 83 24 -- 061940
3D 83 23 D4 3E C5 2E 5D 75 00 04 3D 05 8B 23 A4 -- 061950
CC 3E C5 2E 00 02 05 C7 23 A8 3E C5 2E 12 7E 00 -- 061960
2E 1D 7E 00 3D 83 24 04 3E C5 2E FF FF 05 C7 23 -- 061970
EB 00 04 05 C7 06 75 00 02 3D 05 8B 23 A8 3E C5 -- 061980
A8 3E C5 2E AA EB 00 03 05 C7 23 A8 3E C5 2E B5 -- 061990
8F C6 69 F6 2B 02 EB 00 01 BE 05 75 00 3D 83 23 -- 0619A0
00 00 20 C8 57 56 CB 5E 5F C9 05 89 0A 7E C5 12 -- 0619B0
8F 05 C7 0A 7E C5 0A 7F 00 3D 83 23 D4 3E C5 2E -- 0619C0
FF 2E 23 D4 36 FF 2E 23 D6 36 FF 2E 00 97 E9 12 -- 0619D0
08 C4 83 00 34 DE 41 9A 23 D0 36 FF 2E 23 D2 36 -- 0619E0
D8 06 03 2E 04 E0 C1 05 8B 23 D0 3E C5 2E 10 6A -- 0619F0
9A 50 F0 46 8D 16 50 52 23 DA 16 8B 2E 23 01 FE -- 061A00
D4 36 FF 2E 23 D6 36 FF 2E 0A C4 83 00 5C ED 6E -- 061A10
00 34 DE 1D 9A 23 D0 36 FF 2E 23 D2 36 FF 2E 23 -- 061A20
1C C1 9A 50 F0 46 8D 16 50 E0 46 8D 16 08 C4 83 -- 061A30
C5 2E 1F 75 C0 0B 05 89 0A 7E C5 08 C4 83 00 44 -- 061A40
44 06 48 9A 50 E0 46 8D 16 FF FF 05 C7 23 CC 3E -- 061A50

5E 5F C9 00 01 05 C7 23 AC 3E C5 2E 04 C4 83 00 -- 061A60
04 3D 05 8B 23 A4 3E C5 2E 00 00 10 C8 57 56 CB -- 061A70
9B 05 D9 9B 0A 7E C5 0E 76 C4 01 A0 E9 03 75 00 -- 061A80
0E 76 FF 10 76 FF 14 76 00 5C ED 94 9A 1C D8 26 -- 061A90
76 C4 08 C4 83 00 4C 00 00 9A 0A 76 FF 0C 76 FF -- 061AA0
ED 94 9A 04 5C D8 26 9B 04 45 D9 9B 0A 7E C5 0E -- 061AB0
76 FF 50 00 04 05 0E 46 8B 10 76 FF 1C 76 00 5C -- 061AC0
08 C4 83 00 4C 00 00 9A 50 00 04 05 0A 46 8B 0C -- 061AD0
DC 2E 9B 24 D8 26 9B 05 D9 9B 0E 7E C5 0A 76 C4 -- 061AE0
0E 7E C5 0A 76 C4 1C 72 00 5C ED 94 9A 24 40 1E -- 061AF0
9A 24 40 1E DC 2E 9B 04 64 D8 26 9B 04 45 D9 9B -- 061B00
```

434

```
01  06  E9  12  90  05  C7  12  7E  C5  0A  73  00  5C  ED  94  --  061B10
D9  9B  04  45  D9  9B  F0  5E  D9  9B  05  D9  9B  0A  7E  C5  --  061B20
04  45  D9  9B  F4  5E  D9  9B  05  D9  9B  0E  7E  C5  F8  5E  --  061B30
76  FF  16  74  00  3D  83  23  B0  3E  C5  2E  FC  5E  D9  9B  --  061B40
C4  83  00  44  0A  0F  9A  50  F0  46  8D  16  12  76  FF  14  --  061B50
57  75  00  02  3D  05  8B  23  A4  3E  C5  2E  00  C2  E9  08  --  061B60
2E  23  D8  06  03  2E  04  E0  C1  05  8B  23  D0  3E  C5  2E  --  061B70
00  4C  09  D6  9A  50  F0  46  8D  16  50  52  23  DA  16  8B  --  061B80
85  E9  12  8E  05  C7  12  7E  C5  0A  75  C0  0B  08  C4  83  --  061B90
8D  16  00  5C  ED  99  9A  05  DD  9B  24  48  3E  C5  2E  00  --  061BA0
50  F0  46  8D  16  0C  C4  83  00  34  E5  E7  9A  50  F0  46  --  061BB0
03  3D  05  8B  23  A4  3E  C5  2E  57  EB  00  44  05  B4  9A  --  061BC0
06  03  2E  04  E0  C1  05  8B  24  00  3E  C5  2E  53  75  00  --  061BD0
D6  9A  50  F0  46  8D  16  50  52  24  0A  16  8B  2E  24  08  --  061BE0
9B  24  4C  3E  C5  2E  9D  74  C0  0B  08  C4  83  00  4C  09  --  061BF0
E7  9A  50  F0  46  8D  16  00  5C  ED  99  9A  05  DD  01  FE  --  061C00
00  44  06  48  9A  50  F0  46  8D  16  0C  C4  83  00  34  E5  --  061C10
C8  57  56  CB  5E  5F  C9  9B  05  89  12  7E  C5  04  C4  83  --  061C20
00  02  B8  50  EE  46  8D  16  00  00  EE  46  C7  00  00  12  --  061C30
40  D0  9A  01  91  68  03  6A  50  05  89  23  A4  3E  C5  2E  --  061C40
ED  99  9A  05  DD  9B  24  48  3E  C5  2E  0A  C4  83  00  64  --  061C50
0C  C4  83  00  34  E5  E7  9A  0A  76  FF  0C  76  FF  00  5C  --  061C60
00  44  1C  C1  9A  0A  76  FF  0C  76  FF  50  F0  46  8D  16  --  061C70
FF  0C  76  FF  2D  75  C0  0B  05  89  0E  7E  C5  08  C4  83  --  061C80
0B  05  89  0E  7E  C5  04  C4  83  00  44  05  B4  9A  0A  76  --  061C90
04  C4  83  00  44  06  48  9A  50  F0  46  8D  16  16  75  C0  --  061CA0
57  56  CB  5E  5F  C9  9B  00  01  05  C7  23  AC  3E  C5  2E  --  061CB0
C4  83  00  34  EE  9B  9A  50  E0  46  8D  16  00  00  20  C8  --  061CC0
76  FF  0C  76  FF  16  74  00  3D  83  23  B0  3E  C5  2E  04  --  061CD0
1A  E9  08  C4  83  00  44  0C  F1  9A  50  E0  46  8D  16  0A  --  061CE0
46  8D  16  7A  75  00  02  3D  05  8B  23  A4  3E  C5  2E  02  --  061CF0
4C  0B  F2  9A  24  38  36  FF  2E  24  3A  36  FF  2E  50  E0  --  061D00
C1  05  8B  23  D0  3E  C5  2E  31  74  C0  0B  08  C4  83  00  --  061D10
8D  16  50  52  23  DA  16  8B  2E  23  D8  06  03  2E  04  E0  --  061D20
C5  0A  74  C0  0B  08  C4  83  00  4C  0E  F6  9A  50  E0  46  --  061D30
24  3A  36  FF  2E  10  6A  01  C2  E9  FF  FF  05  C7  0A  7E  --  061D40
83  00  5C  ED  6E  9A  50  F0  46  8D  16  24  38  36  FF  2E  --  061D50
C5  04  C4  83  00  44  05  B4  9A  50  F0  46  8D  16  0A  C4  --  061D60
03  3D  05  8B  23  A4  3E  C5  2E  01  94  E9  05  89  0A  7E  --  061D70
36  FF  2E  24  3E  36  FF  2E  50  E0  46  8D  16  6B  75  00  --  061D80
C5  2E  2A  74  C0  0B  08  C4  83  00  4C  0B  F2  9A  24  3C  --  061D90
16  8B  2E  24  08  06  03  2E  04  E0  C1  05  8B  24  00  3E  --  061DA0
C4  83  00  4C  0E  F6  9A  50  E0  46  8D  16  50  52  24  0A  --  061DB0
2E  24  3E  36  FF  2E  10  6A  FF  77  E9  03  74  C0  0B  08  --  061DC0
C4  83  00  5C  ED  6E  9A  50  F0  46  8D  16  24  3C  36  FF  --  061DD0
C5  2E  FF  7E  E9  00  44  06  48  9A  50  F0  46  8D  16  0A  --  061DE0
46  8D  16  01  0E  E9  03  74  00  04  3D  05  8B  23  A4  3E  --  061DF0

F2  9A  24  38  36  FF  2E  24  3A  36  FF  2E  50  E0  01  FE  --  061E00
8B  23  D0  3E  C5  2E  30  74  C0  0B  08  C4  83  00  4C  0B  --  061E10
50  52  23  DA  16  8B  2E  23  D8  06  03  2E  04  E0  C1  05  --  061E20
74  C0  0B  08  C4  83  00  4C  0E  F6  9A  50  E0  46  8D  16  --  061E30
3A  36  FF  2E  10  6A  39  EB  FF  FF  05  C7  0A  7E  C5  09  --  061E40
00  5C  ED  6E  9A  50  F0  46  8D  16  24  38  36  FF  2E  24  --  061E50
04  C4  83  00  44  05  B4  9A  50  F0  46  8D  16  0A  C4  83  --  061E60
C7  23  A8  3E  C5  2E  09  75  00  3D  83  05  89  0A  7E  C5  --  061E70
06  03  2E  04  E0  C1  05  8B  24  00  3E  C5  2E  00  02  05  --  061E80
FF  2E  24  3E  36  FF  2E  50  52  24  0A  16  8B  2E  24  08  --  061E90
6A  5E  75  C0  0B  08  C4  83  00  4C  0E  F6  9A  24  3C  36  --  061EA0
50  F0  46  8D  16  24  3C  36  FF  2E  24  3E  36  FF  2E  10  --  061EB0
```

```
06  48  9A  50  F0  46  8D  16  0A  C4  83  00  5C  ED  6E  9A  --  061EC0
2E  1D  75  00  3D  83  05  89  0A  7E  C5  04  C4  83  00  44  --  061ED0
EB  00  04  05  C7  06  75  00  02  3D  05  8B  23  A8  3E  C5  --  061EE0
A8  3E  C5  2E  11  EB  00  03  05  C7  23  A8  3E  C5  2E  1C  --  061EF0
5E  5F  C9  00  00  05  C7  0A  7E  C5  07  74  00  3D  83  23  --  061F00
36  FF  2E  0A  76  FF  0C  76  FF  00  00  20  C8  57  56  CB  --  061F10
0B  08  C4  83  00  4C  0B  F2  9A  24  38  36  FF  2E  24  3A  --  061F20
06  03  2E  04  E0  C1  05  8B  23  D0  3E  C5  2E  31  74  C0  --  061F30
9A  0A  76  FF  0C  76  FF  50  52  23  DA  16  8B  2E  23  D8  --  061F40
05  C7  0E  7E  C5  09  74  C0  0B  08  C4  83  00  4C  0E  F6  --  061F50
24  38  36  FF  2E  24  3A  36  FF  2E  10  6A  60  EB  FF  FF  --  061F60
46  8D  16  0A  C4  83  00  5C  ED  6E  9A  50  F0  46  8D  16  --  061F70
C5  08  C4  83  00  44  1C  C1  9A  50  F0  46  8D  16  50  E0  --  061F80
05  B4  9A  50  F0  46  8D  16  2C  75  C0  0B  05  89  0E  7E  --  061F90
8D  16  16  75  C0  0B  05  89  0E  7E  C5  04  C4  83  00  44  --  061FA0
23  AC  3E  C5  2E  04  C4  83  00  44  06  48  9A  50  E0  46  --  061FB0
46  C7  00  00  12  C8  57  56  CB  5E  5F  C9  00  01  05  C7  --  061FC0
E9  03  74  00  02  3D  05  8B  23  A4  3E  C5  2E  00  01  EE  --  061FD0
D8  06  03  2E  04  E0  C1  05  8B  23  D0  3E  C5  2E  00  F2  --  061FE0
70  9A  0A  76  FF  0C  76  FF  50  52  23  DA  16  8B  2E  23  --  061FF0
75  00  EE  7E  83  EE  46  89  08  C4  83  00  4C  09  01  FE  --  062000
23  B0  3E  C5  2E  00  DE  E9  12  8E  05  C7  0E  7E  C5  0A  --  062010
76  FF  0C  76  FF  0E  76  FF  10  76  FF  17  74  00  3D  83  --  062020
A4  3E  C5  2E  00  BD  E9  08  C4  83  00  44  0E  DB  9A  0A  --  062030
36  FF  2E  50  F0  46  8D  16  45  75  00  02  3D  05  8B  23  --  062040
50  36  FF  2E  24  52  36  FF  2E  24  38  36  FF  2E  24  3A  --  062050
76  FF  0C  76  FF  23  C4  36  FF  2E  23  C6  36  FF  2E  24  --  062060
B4  9A  50  F0  46  8D  16  14  C4  83  00  34  EB  77  9A  0A  --  062070
3E  C5  2E  6C  EB  05  89  0E  7E  C5  04  C4  83  00  44  05  --  062080
FF  2E  50  F0  46  8D  16  60  75  00  03  3D  05  8B  23  A4  --  062090
36  FF  2E  24  56  36  FF  2E  24  3C  36  FF  2E  24  3E  36  --  0620A0
FF  0C  76  FF  24  14  36  FF  2E  24  16  36  FF  2E  24  54  --  0620B0
9A  50  F0  46  8D  16  14  C4  83  00  34  EB  77  9A  0A  76  --  0620C0
00  03  3D  05  8B  23  A4  3E  C5  2E  AD  EB  00  44  06  48  --  0620D0
08  06  03  2E  04  E0  C1  05  8B  24  00  3E  C5  2E  17  75  --  0620E0
C8  57  56  CB  5E  5F  C9  FE  FF  E9  24  0A  16  8B  2E  24  --  0620F0
36  FF  2E  50  F0  46  8D  16  00  01  DE  46  C7  00  00  22  --  062100
50  36  FF  2E  24  52  36  FF  2E  24  38  36  FF  2E  24  3A  --  062110
76  FF  0C  76  FF  23  C4  36  FF  2E  23  C6  36  FF  2E  24  --  062120
8D  16  50  E0  46  8D  16  14  C4  83  00  34  EB  77  9A  0A  --  062130
05  89  0E  7E  C5  08  C4  83  00  44  1C  C1  9A  50  F0  46  --  062140
C4  83  00  44  05  B4  9A  50  F0  46  8D  16  2C  75  C0  0B  --  062150
C7  23  AC  3E  C5  2E  16  75  C0  0B  05  89  0E  7E  C5  04  --  062160
04  C4  83  00  44  06  48  9A  50  E0  46  8D  16  00  01  05  --  062170
2E  00  00  FC  46  C7  00  00  3A  C8  57  56  CB  5E  5F  C9  --  062180
05  C7  24  34  3E  C5  2E  FE  46  89  05  8B  23  A4  3E  C5  --  062190

89  23  A4  3E  C5  2E  00  02  B8  50  FC  46  8D  16  00  01  --  0621A0
2E  0A  C4  83  00  64  40  D0  9A  01  91  68  03  6A  50  05  --  0621B0
9A  0A  76  FF  0C  76  FF  11  74  00  3D  83  23  B4  3E  C5  --  0621C0
16  50  FC  46  8D  16  02  4D  E9  04  C4  83  00  44  12  13  --  0621D0
24  58  3E  C5  2E  05  6A  50  F0  46  8D  16  50  F4  46  8D  --  0621E0
2E  14  C4  83  00  64  3D  BA  9A  01  90  68  06  6A  35  FF  --  0621F0
76  FF  0C  76  FF  1F  74  00  3D  83  23  B0  3E  C5  01  FE  --  062200
9A  00  5C  ED  99  9A  F0  46  D9  9B  50  F4  46  8D  16  0A  --  062210
5E  DD  9B  E8  D9  9B  01  FF  E9  10  C4  83  00  44  12  AA  --  062220
31  75  00  5C  ED  94  9A  D6  5E  DC  9B  F0  46  D9  9B  D6  --  062230
9A  CE  5E  DC  9B  F4  46  D9  9B  CE  5E  DD  9B  EE  D9  9B  --  062240
46  D9  9B  C6  5E  DD  9B  EE  D9  9B  1B  75  00  5C  ED  94  --  062250
EB  00  01  B8  05  75  00  5C  ED  94  9A  C6  5E  DC  9B  F8  --  062260
```

436

```
05 75 04 FE 7E 83 19 74 C0 0B DE 46 89 C0 2B 02 -- 062270
05 89 23 A8 3E C5 2E E0 D1 C0 2B 02 EB 00 01 B8 -- 062280
7E E9 03 76 00 02 3D 00 02 2D FE 46 8B 01 8C E9 -- 062290
11 2E 10 E0 10 8C 10 86 A7 FF 2E D8 8B E0 D1 01 -- 0622A0
D8 06 03 2E 04 E0 C1 05 8B 23 D0 3E C5 2E 10 6A -- 0622B0
ED 6E 9A 50 E0 46 8D 16 50 52 23 DA 16 8B 2E 23 -- 0622C0
F4 46 8D 16 50 E0 46 8D 16 02 6A 0A C4 83 00 5C -- 0622D0
83 00 34 EB F3 9A 00 5C ED 99 9A F0 46 D9 9B 50 -- 0622E0
C5 04 C4 83 00 44 05 B4 9A 50 E0 46 8D 16 12 C4 -- 0622F0
04 E0 C1 05 8B 24 00 3E C5 2E 10 6A 8A EB 0A 7E -- 062300
E0 46 8D 16 50 52 24 0A 16 8B 2E 24 08 06 03 2E -- 062310
50 E0 46 8D 16 03 6A 0A C4 83 00 5C ED 6E 9A 50 -- 062320
F3 9A 00 5C ED 99 9A F0 46 D9 9B 50 F4 46 8D 16 -- 062330
00 44 06 48 9A 50 E0 46 8D 16 12 C4 83 00 34 EB -- 062340
03 2E 04 E0 C1 05 8B 23 D0 3E C5 2E 10 6A AA EB -- 062350
9A 50 E0 46 8D 16 50 52 23 DA 16 8B 2E 23 D8 06 -- 062360
8D 16 50 E0 46 8D 16 02 6A 0A C4 83 00 5C ED 6E -- 062370
34 EB F3 9A 00 5C ED 99 9A F0 46 D9 9B 50 F4 46 -- 062380
C4 83 00 44 05 B4 9A 50 E0 46 8D 16 12 C4 83 00 -- 062390
23 A8 3E C5 2E 74 75 00 3D 83 05 89 0A 7E C5 04 -- 0623A0
04 E0 C1 05 8B 24 00 3E C5 2E 10 6A 00 02 05 C7 -- 0623B0
E0 46 8D 16 50 52 24 0A 16 8B 2E 24 08 06 03 2E -- 0623C0
50 E0 46 8D 16 03 6A 0A C4 83 00 5C ED 6E 9A 50 -- 0623D0
F3 9A 00 5C ED 99 9A F0 46 D9 9B 50 F4 46 8D 16 -- 0623E0
00 44 06 48 9A 50 E0 46 8D 16 12 C4 83 00 34 EB -- 0623F0
2E 0B 75 00 3D 83 05 89 0A 7E C5 04 C4 83 01 FE -- 062400
00 05 C7 0A 7E C5 07 EB 00 04 05 C7 23 A8 3E C5 -- 062410
24 34 3E C5 2E 05 89 23 A4 3E C5 2E FE 46 8B 00 -- 062420
C7 00 00 1E C8 57 56 CB 5E 5F C9 9B 00 00 05 C7 -- 062430
8D 16 50 F6 46 8D 16 50 FE 46 8D 16 00 00 FE 46 -- 062440
90 68 06 6A 35 FF 24 58 3E C5 2E 04 6A 50 F2 46 -- 062450
24 00 3E C5 2E 10 6A 14 C4 83 00 64 3D BA 9A 01 -- 062460
52 24 0A 16 8B 2E 24 08 06 03 2E 04 E0 C1 05 8B -- 062470
03 6A 0A C4 83 00 5C ED 6E 9A 50 E2 46 8D 16 50 -- 062480
99 9A F2 46 D9 9B 50 F6 46 8D 16 50 E2 46 8D 16 -- 062490
50 E2 46 8D 16 12 C4 83 00 34 EB F3 9A 00 5C ED -- 0624A0
00 3D 83 05 89 0A 7E C5 04 C4 83 00 44 06 48 9A -- 0624B0
CB 5E 5F C9 9B 00 03 05 C7 23 A8 3E C5 2E 09 75 -- 0624C0
DC 9B E8 D9 9B 00 00 DC 46 C7 00 00 34 C8 57 56 -- 0624D0
D4 5E DD 9B EE D9 9B 31 75 00 5C ED 94 9A 0A 5E -- 0624E0
75 00 5C ED 94 9A D4 5E DC 9B 05 D9 9B 12 7E C5 -- 0624F0
9B 04 45 D9 9B 12 7E C5 CC 5E DD 9B EE D9 9B 19 -- 062500
2B 02 EB 00 01 B8 05 74 00 5C ED 94 9A CC 5E DC -- 062510
04 E0 C1 05 8B 23 D0 3E C5 2E 10 6A DE 46 89 C0 -- 062520
F0 46 8D 16 50 52 23 DA 16 8B 2E 23 D8 06 03 2E -- 062530

50 F0 46 8D 16 02 6A 0A C4 83 00 5C ED 6E 9A 50 -- 062540
9A 00 5C ED 99 9A 0A 46 DD 9B 12 76 FF 14 76 FF -- 062550
F0 46 8D 16 50 E0 46 8D 16 12 C4 83 00 34 EB F3 -- 062560
C0 0B 05 89 16 7E C5 08 C4 83 00 44 1C C1 9A 50 -- 062570
B4 9A 50 F0 46 8D 16 31 EB 00 44 57 40 9A 07 74 -- 062580
8B E3 75 C0 0B 05 89 16 7E C5 04 C4 83 00 44 05 -- 062590
46 8D 16 0D 74 C0 0B 05 89 23 AC 3E C5 2E DE 46 -- 0625A0
56 CB 5E 5F C9 9B 04 C4 83 00 44 06 48 9A 50 E0 -- 0625B0
FF 24 5C 36 FF 2E 24 5E 36 FF 2E 00 00 08 C8 57 -- 0625C0
75 C0 0B 08 C4 83 00 64 5A 20 9A 0A 76 FF 0C 76 -- 0625D0
D9 9B EE D9 9B F8 5E D9 9B 24 60 06 DD 2E 9B 27 -- 0625E0
14 69 9A 50 F8 46 8D 16 0E 76 FF 10 76 FF FC 5E -- 0625F0
2E 24 6A 36 FF 2E 00 82 E9 08 C4 83 00 44 01 FE -- 062600
83 00 64 5A 20 9A 0A 76 FF 0C 76 FF 24 68 36 FF -- 062610
```

437

```
FF 2E BB EB 24 6C 06 DD 2E 9B 08 75 CO 0B 08 C4 -- 062620
20 9A 0A 76 FF OC 76 FF 24 74 36 FF 2E 24 76 36 -- 062630
5E D9 9B EE D9 9B OF 75 CO 0B 08 C4 83 00 64 5A -- 062640
FF 2E 24 7A 36 FF 2E 97 EB 24 6C 06 DD 2E 9B F8 -- 062650
C4 83 00 64 5A 20 9A 0A 76 FF OC 76 FF 24 78 36 -- 062660
06 DD 2E 9B F8 5E D9 9B EE D9 9B 10 75 CO 0B 08 -- 062670
5E 5F C9 9B 12 90 05 C7 OE 7E C5 FF 6B E9 24 60 -- 062680
02 3D 05 8B 23 A4 3E C5 2E 00 00 10 C8 57 56 CB -- 062690
05 D9 9B 24 7C 3E C5 2E 24 50 36 C4 2E 65 75 00 -- 0626A0
DC 9B 05 D9 9B 0A 7E C5 FO 5E DD 9B 24 D8 26 9B -- 0626B0
2E 24 84 36 C4 2E F8 5E D9 9B 04 D8 26 9B FO 4E -- 0626C0
C5 FO 5E DD 9B 24 D8 26 9B 05 D9 9B 24 80 3E C5 -- 0626D0
D9 9B 04 D8 26 9B FO 4E DC 9B 04 45 D9 9B 0A 7E -- 0626E0
15 E6 9A 50 F8 46 8D 16 OE 76 FF 10 76 FF FC 5E -- 0626F0
3D 05 8B 23 A4 3E C5 2E 01 01 E9 08 C4 83 00 44 -- 062700
D9 9B 24 88 3E C5 2E 24 54 36 C4 2E 61 75 00 03 -- 062710
9B 05 D9 9B 0A 7E C5 FO 5E DD 9B 24 D8 26 9B 05 -- 062720
24 90 36 C4 2E F8 5E D9 9B 04 D8 26 9B FO 4E DC -- 062730
FO 5E DD 9B 24 D8 26 9B 05 D9 9B 24 8C 3E C5 2E -- 062740
9B 04 D8 26 9B FO 4E DC 9B 04 45 D9 9B 0A 7E C5 -- 062750
A1 9A 50 F8 46 8D 16 OE 76 FF 10 76 FF FC 5E D9 -- 062760
74 00 04 3D 05 8B 23 A4 3E C5 2E 8D EB 00 44 16 -- 062770
76 FF OE 76 FF 10 76 FF 00 02 05 C7 00 85 E9 03 -- 062780
83 OE 7E C5 08 C4 83 00 44 14 69 9A 0A 76 FF OC -- 062790
3E C5 2E 00 02 05 C7 23 A8 3E C5 2E 09 75 00 3D -- 0627A0
FF OC 76 FF OE 76 FF 10 76 FF 00 03 05 C7 23 A4 -- 0627B0
00 3D 83 OE 7E C5 08 C4 83 00 44 14 69 9A 0A 76 -- 0627C0
05 C7 06 75 00 02 3D 05 8B 23 A8 3E C5 2E 1D 75 -- 0627D0
2E 11 EB 00 03 05 C7 23 A8 3E C5 2E 1C EB 00 04 -- 0627E0
00 00 05 C7 OE 7E C5 07 74 00 3D 83 23 A8 3E C5 -- 0627F0
CB 5E 5F C9 9B 00 04 05 C7 23 A4 3E C5 2E 01 FE -- 062800
C1 05 8B 23 DO 3E C5 2E 10 6A 00 00 20 C8 57 56 -- 062810
8D 16 50 52 23 DA 16 8B 2E 23 D8 06 03 2E 04 EO -- 062820
50 FO 46 8D 16 0A C4 83 00 5C ED 6E 9A 50 FO 46 -- 062830
0A 76 FF OC 76 FF 24 38 36 FF 2E 24 3A 36 FF 2E -- 062840
00 3D 83 23 BO 3E C5 2E OC C4 83 00 34 ED 84 9A -- 062850
EO 46 8D 16 1B 75 00 3D 83 23 B4 3E C5 2E 25 74 -- 062860
7E C5 08 C4 83 00 44 1C C1 9A 50 FO 46 8D 16 50 -- 062870
44 05 B4 9A 50 FO 46 8D 16 40 75 CO 0B 05 89 OE -- 062880
3E C5 2E 2A 75 CO 0B 05 89 OE 7E C5 04 C4 83 00 -- 062890
75 00 3D 83 23 B4 3E C5 2E 20 74 00 3D 83 23 BO -- 0628A0
9A 50 EO 46 8D 16 00 01 05 C7 23 AC 3E C5 2E 16 -- 0628B0
00 10 C8 57 56 CB 5E 5F C9 04 C4 83 00 44 06 48 -- 0628C0
06 03 2E 04 EO C1 05 8B 24 00 3E C5 2E 10 6A 00 -- 0628D0

6E 9A 50 FO 46 8D 16 50 52 24 0A 16 8B 2E 24 08 -- 0628E0
24 3E 36 FF 2E 50 FO 46 8D 16 0A C4 83 00 5C ED -- 0628F0
00 34 ED 84 9A 0A 76 FF OC 76 FF 24 3C 36 FF 2E -- 062900
04 C4 83 00 44 06 48 9A 50 FO 46 8D 16 OC C4 83 -- 062910
2E 00 00 20 C8 57 56 CB 5E 5F C9 05 89 OE 7E C5 -- 062920
34 D8 26 9B 05 D9 9B 24 94 3E C5 2E 24 98 36 C4 -- 062930
D9 9B 24 9C 3E C5 2E 24 A0 36 C4 2E F4 5E D9 9B -- 062940
EO 5E DD 9B EE D9 9B FO 5E D9 9B 34 D8 26 9B 05 -- 062950
5C ED 94 9A EO 5E DC 9B FO 66 D8 9B F4 46 D9 9B -- 062960
46 D9 9B 0B EB FO 66 D8 9B F4 46 D9 9B 0A 76 00 -- 062970
94 9A 24 40 1E DC 2E 9B EO D9 9B FO 66 D8 9B F4 -- 062980
76 FF 10 76 FF 00 DD E9 12 90 B8 06 76 00 5C ED -- 062990
23 C6 36 FF 2E 24 50 36 FF 2E 24 52 36 FF 2E OE -- 0629A0
83 00 34 E8 6F 9A 50 F8 46 8D 16 23 C4 36 FF 2E -- 0629B0
16 36 FF 2E 24 54 36 FF 2E 24 56 36 FF 2E 10 C4 -- 0629C0
```

438

```
50 EC 46 8D 16 50 E8 46 8D 16 24 14 36 FF 2E 24 -- 0629D0
00 08 05 C4 8B 16 50 F8 46 8D 16 08 6A 08 EC 83 -- 0629E0
C4 83 00 34 E9 21 9A 0A C4 83 00 5C ED 6E 9A 50 -- 0629F0
FF 2E 24 3E 36 FF 2E 32 75 01 16 7E 83 18 01 FE -- 062A00
ED 99 9A E8 46 D9 9B 12 76 FF 14 76 FF 24 3C 36 -- 062A10
76 FF 0C 76 FF 00 5C ED 99 9A EC 46 D9 9B 00 5C -- 062A20
75 00 16 7E 83 3D EB 1C C4 83 00 34 E9 ED 9A 0A -- 062A30
12 7E C5 00 5C ED 99 9A 04 45 D9 9B 12 7E C5 37 -- 062A40
5C ED 99 9A E8 46 D9 9B 00 5C ED 99 9A 05 D9 9B -- 062A50
0A 76 FF 0C 76 FF 00 5C ED 99 9A EC 46 D9 9B 00 -- 062A60
56 CB 5E 5F C9 9B C0 2B 24 C4 83 00 34 E9 BA 9A -- 062A70
2E 04 E0 C1 05 8B 23 D0 3E C5 2E 00 00 20 C8 57 -- 062A80
24 52 36 FF 2E 50 52 23 DA 16 8B 2E 23 D8 06 03 -- 062A90
16 23 C4 36 FF 2E 23 C6 36 FF 2E 24 50 36 FF 2E -- 062AA0
00 3E C5 2E 10 C4 83 00 34 E8 6F 9A 50 F8 46 8D -- 062AB0
24 0A 16 8B 2E 24 08 06 03 2E 04 E0 C1 05 8B 24 -- 062AC0
16 36 FF 2E 24 54 36 FF 2E 24 56 36 FF 2E 50 52 -- 062AD0
00 34 E8 6F 9A 50 F0 46 8D 16 24 14 36 FF 2E 24 -- 062AE0
D8 9B F8 46 D9 9B E8 5E DD 9B EE D9 9B 10 C4 83 -- 062AF0
46 D9 9B 0A 76 00 5C ED 94 9A E8 5E DC 9B F0 66 -- 062B00
9B F0 66 D8 9B F8 46 D9 9B 0B EB F0 66 D8 9B F8 -- 062B10
9B 40 73 00 5C ED 94 9A 24 40 1E DC 2E 9B E0 D9 -- 062B20
DC 9B F4 66 D8 9B FC 46 D9 9B E0 5E DD 9B EE D9 -- 062B30
66 D8 9B FC 46 D9 9B 0A 76 00 5C ED 94 9A E0 5E -- 062B40
2E 9B E0 D9 9B F4 66 D8 9B FC 46 D9 9B 0B EB F4 -- 062B50
B8 03 EB C0 2B 04 73 00 5C ED 94 9A 24 40 1E DC -- 062B60
F8 46 C7 00 00 0C C8 57 56 CB 5E 5F C9 9B 00 01 -- 062B70
E0 E9 03 74 00 01 3D 05 8B 24 20 3E C5 2E 00 00 -- 062B80
74 00 0A 7E 83 62 74 00 3D 83 24 A4 3E C5 2E 00 -- 062B90
2E 24 B2 36 FF 2E 00 6A 00 6A 50 F8 46 8D 16 35 -- 062BA0
FF 2E 24 AC 36 FF 2E 24 AE 36 FF 2E 24 B0 36 FF -- 062BB0
B4 9A 50 FA 46 89 C0 2B 24 A8 36 FF 2E 24 AA 36 -- 062BC0
36 FF 2E 24 AE 36 FF 2E 00 6A 16 C4 83 00 44 D8 -- 062BD0
5C 94 FB 9A 24 A8 36 FF 2E 24 AA 36 FF 2E 24 AC -- 062BE0
0C 7E 83 00 00 05 C7 24 A4 3E C5 2E 0A C4 83 00 -- 062BF0
3A 7D 04 FE 7E 83 00 00 FE 46 C7 45 74 00 01 FE -- 062C00
24 24 3E C5 2E F4 76 FF F6 76 FF 50 F8 46 8D 16 -- 062C10
FE 76 FF 50 52 02 55 8B 05 03 09 E0 C1 FE 46 8B -- 062C20
40 D0 9A 01 45 68 09 6A 50 FC 46 89 C0 2B 03 6A -- 062C30
C7 24 20 3E C5 2E C0 EB FE 46 FF 16 C4 83 00 64 -- 062C40
4E E3 9A 35 FF 02 75 FF 24 30 3E C5 2E 00 00 05 -- 062C50
45 C7 00 00 05 C7 24 30 3E C5 2E 04 C4 83 00 64 -- 062C60
E4 46 C7 00 00 22 C8 57 56 CB 5E 5F C9 00 00 02 -- 062C70

F9 24 9A 0A 76 FF 0C 76 FF 00 00 E0 46 C7 00 00 -- 062C80
68 02 4B E9 C0 2B 05 74 00 03 3D 04 C4 83 00 34 -- 062C90
2A 36 FF 2E 35 FF 02 75 FF 24 24 3E C5 2E 08 00 -- 062CA0
C0 0B 0A C4 83 00 54 3C 28 9A 24 28 36 FF 2E 24 -- 062CB0
0B E2 46 89 00 44 18 53 9A 00 01 E4 46 C7 05 75 -- 062CC0
2E 50 00 10 05 0A 46 8B 0C 76 FF 01 6A 4D 74 C0 -- 062CD0
8B 2E 23 D8 06 03 2E 04 E0 C1 05 8B 23 D0 3E C5 -- 062CE0
83 00 44 16 FF 9A 50 F0 46 8D 16 50 52 23 DA 16 -- 062CF0
48 9A 50 F0 46 8D 16 91 75 C0 0B E0 46 89 0E C4 -- 062D00
FF 7A E9 03 74 C0 0B E0 46 89 04 C4 83 00 44 06 -- 062D10
62 74 00 E2 7E 83 E6 46 89 05 8B 23 A4 3E C5 2E -- 062D20
00 44 03 8D 9A 00 4C 01 B5 9A 05 74 00 E4 7E 83 -- 062D30
8D 16 00 03 05 C7 23 A4 3E C5 2E 00 54 C8 1C 9A -- 062D40
EF 50 9A 50 00 10 05 0A 46 8B 0C 76 FF 50 E8 46 -- 062D50
F9 9A 00 5C ED 99 9A E8 46 D9 9B 08 C4 83 00 34 -- 062D60
9A EC 46 D9 9B 05 89 0A 7E C5 08 C4 83 00 5C ED -- 062D70
```

439

```
89 0A 7E C5 08 C4 83 00 5C ED F9 9A 00 5C ED 99 -- 062D80
24 A4 3E C5 2E 01 19 E9 03 75 00 E4 7E 83 02 45 -- 062D90
AC 36 FF 2E 24 AE 36 FF 2E 1B 74 00 01 3D 05 8B -- 062DA0
05 C7 24 A4 3E C5 2E 04 C4 83 00 5C D3 78 9A 24 -- 062DB0
FF 2E 24 B4 36 FF 2E 24 B6 36 FF 2E 24 6A 00 01 -- 062DC0
0A C4 83 00 5C ED 6E 9A 24 B0 36 FF 2E 24 B2 36 -- 062DD0
2E 24 AC 36 FF 2E 24 AE 36 FF 2E 50 E0 46 8D 16 -- 062DE0
FF 2E 24 AA 36 FF 2E 24 B0 36 FF 2E 24 B2 36 FF -- 062DF0
00 44 D2 AC 9A 50 DE 46 89 C0 2B 24 A8 36 01 FE -- 062E00
01 00 68 3C 75 00 3D 83 24 20 3E C5 2E 12 C4 83 -- 062E10
89 24 30 3E C5 2E 04 C4 83 00 64 4E A1 9A 04 6A -- 062E20
00 64 59 FE 9A 10 6D 68 18 75 C2 0B 02 55 89 05 -- 062E30
FE 4C E9 05 89 23 A4 3E C5 2E E6 46 8B 02 C4 83 -- 062E40
C5 2E 50 E0 46 8D 16 00 01 05 C7 24 20 3E C5 2E -- 062E50
FF 3D C5 24 2C 3E C5 2E 35 FF 02 75 FF 24 30 3E -- 062E60
24 3E C5 2E 24 28 36 FF 2E 24 2A 36 FF 2E 02 75 -- 062E70
F0 46 8D 16 50 DE 46 89 C0 2B 35 FF 02 75 FF 24 -- 062E80
FF 12 74 00 E0 7E 83 18 C4 83 00 64 1C B4 9A 50 -- 062E90
EB 00 4C 01 1C 9A 02 C4 83 00 64 59 FE 9A E0 76 -- 062EA0
2E 05 89 24 04 3E C5 2E C0 2B 00 4C 01 1C 9A 92 -- 062EB0
05 89 23 A4 3E C5 2E E6 46 8B 05 89 23 D4 3E C5 -- 062EC0
91 68 03 6A 02 6A 50 E0 46 8D 16 14 74 00 03 3D -- 062ED0
5E 5F C9 9B 00 01 B8 0A C4 83 00 64 40 D0 9A 01 -- 062EE0
00 F4 46 C7 00 00 F6 46 C7 00 00 38 C8 57 56 CB -- 062EF0
8D 16 00 E5 E9 03 75 00 3D 83 23 B4 3E C5 2E 00 -- 062F00
2E 04 6A 50 E8 46 8D 16 50 EC 46 8D 16 50 F4 46 -- 062F10
00 64 3D BA 9A 01 90 68 06 6A 35 FF 24 58 3E C5 -- 062F20
DC 9B EC 46 D9 9B D0 5E DD 9B EE D9 9B 14 C4 83 -- 062F30
C8 5E DD 9B EE D9 9B 16 75 00 5C ED 94 9A D0 5E -- 062F40
B8 05 74 00 5C ED 94 9A C8 5E DC 9B F0 46 D9 9B -- 062F50
00 83 E9 03 75 C0 0B F6 46 89 C0 2B 02 EB 00 01 -- 062F60
08 06 03 2E 04 E0 C1 05 8B 24 00 3E C5 2E 10 6A -- 062F70
ED 6E 9A 50 D8 46 8D 16 50 52 24 0A 16 8B 2E 24 -- 062F80
EC 46 8D 16 50 D8 46 8D 16 03 6A 0A C4 83 00 5C -- 062F90
83 00 34 EB F3 9A 00 5C ED 99 9A E8 46 D9 9B 50 -- 062FA0
02 36 FF 2E 24 04 36 FF 2E 24 06 36 FF 2E 12 C4 -- 062FB0
10 6A 08 C4 83 00 34 DE 1D 9A 24 00 36 FF 2E 24 -- 062FC0
2E 04 E0 C1 05 8B 24 00 3E C5 2E 50 D8 46 8D 16 -- 062FD0
00 5C ED 6E 9A 50 52 24 0A 16 8B 2E 24 08 06 03 -- 062FE0
C1 05 8B 24 00 3E C5 2E 50 F8 46 8D 16 0A C4 83 -- 062FF0
50 52 24 0A 16 8B 2E 24 08 06 03 2E 04 E0 01 FE -- 063000
04 E0 C1 05 8B 23 D0 3E C5 2E 0A 76 FF 0C 76 FF -- 063010

34 E0 9B 9A 50 52 23 DA 16 8B 2E 23 D8 06 03 2E -- 063020
76 FF 0C 76 FF 50 F8 46 8D 16 00 6A 10 C4 83 00 -- 063030
89 0E C4 83 00 44 16 FF 9A 0E 76 FF 10 76 FF 0A -- 063040
36 FF 2E 24 3E 36 FF 2E 20 75 00 F4 7E 83 F4 46 -- 063050
08 C4 83 00 4C 09 D6 9A 0E 76 FF 10 76 FF 24 3C -- 063060
FF 2E 1C 74 00 F6 7E 83 25 EB C0 2B 04 74 C0 0B -- 063070
36 FF 2E 24 02 36 FF 2E 24 04 36 FF 2E 24 06 36 -- 063080
5F C9 9B 12 90 B8 08 C4 83 00 34 DE 41 9A 24 00 -- 063090
46 8D 16 00 00 FE 46 C7 00 00 2E C8 57 56 CB 5E -- 0630A0
68 03 6A 50 05 89 23 A4 3E C5 2E 00 02 B8 50 FE -- 0630B0
16 50 FE 46 8D 16 0A C4 83 00 64 40 D0 9A 01 91 -- 0630C0
24 58 3E C5 2E 04 6A 50 F2 46 8D 16 50 F6 46 8D -- 0630D0
9B 14 C4 83 00 64 3D BA 9A 01 90 68 06 6A 35 FF -- 0630E0
94 9A DA 5E DC 9B F6 46 D9 9B DA 5E DD 9B EE D9 -- 0630F0
FA 46 D9 9B D2 5E DD 9B EE D9 9B 1B 75 00 5C ED -- 063100
00 FA E9 C0 2B 05 75 00 5C ED 94 9A D2 5E DC 9B -- 063110
50 05 89 23 A4 3E C5 2E 00 03 B8 50 FE 46 8D 16 -- 063120
```

```
2E 10 6A 0A C4 83 00 64 40 D0 9A 01 91 68 03 6A -- 063130
8B 2E 24 08 06 03 2E 04 E0 C1 05 8B 24 00 3E C5 -- 063140
83 00 5C ED 6E 9A 50 E2 46 8D 16 50 52 24 0A 16 -- 063150
D9 9B 50 F6 46 8D 16 50 E2 46 8D 16 03 6A 0A C4 -- 063160
2E 12 C4 83 00 34 EB F3 9A 00 5C ED 99 9A F2 46 -- 063170
FF 2E 24 02 36 FF 2E 24 04 36 FF 2E 24 06 36 FF -- 063180
46 8D 16 10 6A 08 C4 83 00 34 DE 1D 9A 24 00 36 -- 063190
08 06 03 2E 04 E0 C1 05 8B 24 00 3E C5 2E 50 E2 -- 0631A0
0A C4 83 00 5C ED 6E 9A 50 52 24 0A 16 8B 2E 24 -- 0631B0
E2 46 8D 16 24 18 36 FF 2E 24 1A 36 FF 2E 01 6A -- 0631C0
00 34 E2 22 9A 24 14 36 FF 2E 24 16 36 FF 2E 50 -- 0631D0
46 8D 16 24 1C 36 FF 2E 24 1E 36 FF 2E 0E C4 83 -- 0631E0
B8 50 FE 46 8D 16 08 C4 83 00 34 F3 63 9A 50 E2 -- 0631F0
91 68 03 6A 50 05 89 23 A4 3E C5 2E 00 02 01 FE -- 063200
5E 5F C9 9B 00 01 B8 0A C4 83 00 64 40 D0 9A 01 -- 063210
A4 3E C5 2E 00 00 FC 46 C7 00 00 38 C8 57 56 CB -- 063220
05 89 00 02 B8 50 FC 46 8D 16 FE 46 89 05 8B 23 -- 063230
8D 16 0A C4 83 00 64 40 D0 9A 01 91 68 03 6A 50 -- 063240
2E 05 6A 50 F0 46 8D 16 50 F4 46 8D 16 50 FC 46 -- 063250
00 64 3D BA 9A 01 90 68 06 6A 35 FF 24 58 3E C5 -- 063260
FC 46 8D 16 00 AE E9 03 74 03 FE 7E 83 14 C4 83 -- 063270
91 68 03 6A 50 05 89 23 A4 3E C5 2E 00 03 B8 50 -- 063280
24 00 3E C5 2E 10 6A 0A C4 83 00 64 40 D0 9A 01 -- 063290
52 24 0A 16 8B 2E 24 08 06 03 2E 04 E0 C1 05 8B -- 0632A0
D9 9B 0A C4 83 00 5C ED 6E 9A 50 E0 46 8D 16 50 -- 0632B0
ED 94 9A D8 5E DC 9B F4 46 D9 9B D8 5E DD 9B EE -- 0632C0
9B F8 46 D9 9B D0 5E DD 9B EE D9 9B 2C 75 00 5C -- 0632D0
5E DD 9B E8 D9 9B 16 75 00 5C ED 94 9A D0 5E DC -- 0632E0
1D 74 00 5C ED 94 9A C8 5E DC 9B F0 46 D9 9B C8 -- 0632F0
F0 46 D9 9B 50 F4 46 8D 16 50 E0 46 8D 16 03 6A -- 063300
36 FF 2E 12 C4 83 00 34 EB F3 9A 00 5C ED 99 9A -- 063310
B8 50 FC 46 8D 16 00 AB E9 24 1C 36 FF 2E 24 1E -- 063320
9A 01 91 68 03 6A 50 05 89 23 A4 3E C5 2E 00 02 -- 063330
05 8B 23 D0 3E C5 2E 10 6A 0A C4 83 00 64 40 D0 -- 063340
16 50 52 23 DA 16 8B 2E 23 D8 06 03 2E 04 E0 C1 -- 063350
9B EE D9 9B 0A C4 83 00 5C ED 6E 9A 50 E0 46 8D -- 063360
00 5C ED 94 9A D8 5E DC 9B F4 46 D9 9B D8 5E DD -- 063370
5E DC 9B F8 46 D9 9B D0 5E DD 9B EE D9 9B 2C 75 -- 063380
9B C8 5E DD 9B E8 D9 9B 16 75 00 5C ED 94 9A D0 -- 063390
02 6A 1D 74 00 5C ED 94 9A C8 5E DC 9B F0 46 D9 -- 0633A0
99 9A F0 46 D9 9B 50 F4 46 8D 16 50 E0 46 8D 16 -- 0633B0

23 EA 36 FF 2E 12 C4 83 00 34 EB F3 9A 00 5C ED -- 0633C0
83 00 34 F2 E0 9A 50 E0 46 8D 16 23 E8 36 FF 2E -- 0633D0
5E 5F C9 9B 05 89 23 A4 3E C5 2E FE 46 8B 08 C4 -- 0633E0
5C E0 79 9A 50 D8 46 8D 16 00 00 50 C8 57 56 CB -- 0633F0
00 02 3D 05 8B 23 A4 3E C5 2E 04 C4 83 00 01 FE -- 063400
2E B0 5E DD 9B 24 B8 06 DF 2E 9B 00 AC E9 03 74 -- 063410
24 D8 26 9B 05 D9 9B 24 7C 3E C5 2E 24 50 36 C4 -- 063420
B8 46 DC 9B D8 46 DF 9B B8 5E DD 9B B0 76 DC 9B -- 063430
C4 2E B0 5E DD 9B 24 B8 06 DF 2E 9B D0 5E D9 9B -- 063440
9B 24 D8 26 9B 05 D9 9B 24 80 3E C5 2E 24 84 36 -- 063450
9B B8 46 DC 9B DA 46 DF 9B B8 5E DD 9B B0 76 DC -- 063460
2E 04 E0 C1 05 8B 23 D0 3E C5 2E 10 6A D4 5E D9 -- 063470
50 C0 46 8D 16 50 52 23 DA 16 8B 2E 23 D8 06 03 -- 063480
36 FF 2E 50 C0 46 8D 16 0A C4 83 00 5C ED 6E 9A -- 063490
34 ED 84 9A 50 D0 46 8D 16 24 38 36 FF 2E 24 3A -- 0634A0
B8 E9 00 44 05 B4 9A 50 C0 46 8D 16 0C C4 83 00 -- 0634B0
00 AC E9 03 74 00 03 3D 05 8B 23 A4 3E C5 2E 00 -- 0634C0
2E 24 54 36 C4 2E B0 5E DD 9B 24 B8 06 DF 2E 9B -- 0634D0
```

441

```
9B  B0  76  DC  9B  24  D8  26  9B  05  D9  9B  24  88  3E  C5  --  0634E0
9B  D0  5E  D9  9B  B8  46  DC  9B  D8  46  DF  9B  B8  5E  DD  --  0634F0
C5  2E  24  90  36  C4  2E  B0  5E  DD  9B  24  B8  06  DF  2E  --  063500
DD  9B  B0  76  DC  9B  24  D8  26  9B  05  D9  9B  24  8C  3E  --  063510
10  6A  D4  5E  D9  9B  B8  46  DC  9B  DA  46  DF  9B  B8  5E  --  063520
2E  24  08  06  03  2E  04  E0  C1  05  8B  24  00  3E  C5  2E  --  063530
00  5C  ED  6E  9A  50  C0  46  8D  16  50  52  24  0A  16  8B  --  063540
36  FF  2E  24  3E  36  FF  2E  50  C0  46  8D  16  0A  C4  83  --  063550
16  0C  C4  83  00  34  ED  84  9A  50  D0  46  8D  16  24  3C  --  063560
5E  5F  C9  9B  04  C4  83  00  44  06  48  9A  50  C0  46  8D  --  063570
0A  74  00  3D  83  23  B4  3E  C5  2E  EC  8B  55  57  56  CB  --  063580
2B  02  EB  00  01  B8  05  74  00  3D  83  23  AC  3E  C5  2E  --  063590
A8  3E  C5  2E  C0  2B  EC  8B  55  57  56  CB  5E  5F  C9  C0  --  0635A0
89  24  34  3E  C5  2E  05  89  23  AC  3E  C5  2E  05  89  23  --  0635B0
89  23  CC  3E  C5  2E  05  89  23  FC  3E  C5  2E  C0  2B  05  --  0635C0
2B  F2  00  3C  96  CA  00  3C  86  9A  00  CB  5E  5F  C9  05  --  0635D0
23  64  00  6C  22  E8  00  6C  22  E6  00  6C  2B  F0  00  6C  --  0635E0
91  10  00  3C  90  36  00  3C  90  C2  00  3C  96  D0  00  6C  --  0635F0
00  6C  1D  70  00  6C  1D  6C  00  6C  2B  F4  00  3C  01  FE  --  063600
00  3C  96  1A  00  3C  96  CC  00  6C  2C  36  00  6C  1C  AC  --  063610
00  3C  86  A2  00  3C  96  5E  00  3C  98  DC  00  6C  1D  4C  --  063620
00  6C  1D  72  00  6C  1D  6E  00  6C  2B  F6  00  3C  96  60  --  063630
00  3C  92  86  00  3C  96  CE  00  6C  2C  46  00  6C  1C  FC  --  063640
00  3C  96  5A  00  6C  2B  F8  00  6C  1D  5C  00  3C  96  2A  --  063650
00  6C  2B  EE  00  6C  2B  FA  00  3C  92  D2  00  3C  6E  86  --  063660
3E  B0  C6  F7  A0  B5  ED  8D  00  3C  96  0A  00  3C  95  FA  --  063670
00  3C  95  EA  00  3C  95  DA  00  3C  96  C2  00  3C  96  BA  --  063680
BF  EC  CC  CC  CC  CC  CC  CD  00  6C  2B  CA  00  3C  F5  A4  --  063690
00  6C  2B  DD  3F  EC  CC  CC  CC  CC  CC  CD  00  6C  2B  D4  --  0636A0
00  3C  95  E2  00  3C  95  E6  00  3C  95  DE  00  6C  2B  E4  --  0636B0
00  3C  90  98  00  3C  95  F2  00  3C  95  F6  00  3C  95  EE  --  0636C0
00  6C  2B  FE  00  3C  92  EC  00  3C  92  E8  00  3C  90  9C  --  0636D0
00  3C  93  CA  00  6C  2C  12  00  6C  2C  00  00  3C  95  0E  --  0636E0
01  0D  05  8B  45  5A  3E  C5  2E  EC  8B  55  57  56  00  02  --  0636F0
C5  2E  EC  8B  55  57  56  CB  5E  5F  C9  C0  2B  05  89  00  --  063700
CB  5E  5F  C9  C0  2B  05  89  00  02  0D  05  8B  45  5A  3E  --  063710
89  00  04  0D  05  8B  45  5A  3E  C5  2E  EC  8B  55  57  56  --  063720
5A  3E  C5  2E  EC  8B  55  57  56  CB  5E  5F  C9  C0  2B  05  --  063730
57  56  CB  5E  5F  C9  C0  2B  05  89  00  08  0D  05  8B  45  --  063740
89  45  5A  3E  C5  2E  05  8B  45  5E  3E  C5  2E  EC  8B  55  --  063750

F6  46  C7  00  04  50  C8  57  56  CB  5E  5F  C9  C0  2B  05  --  063760
86  C7  00  00  FB  CA  86  C7  00  00  FB  C8  86  C7  00  00  --  063770
9A  01  6A  18  90  68  00  00  FB  CE  86  C7  00  00  FB  CC  --  063780
00  90  05  FE  56  89  FC  46  89  04  C4  83  00  64  4E  A1  --  063790
62  3E  C5  2E  00  6A  00  6A  00  6A  FA  56  89  F8  46  89  --  0637A0
46  89  0A  C4  83  00  64  3C  C2  9A  35  FF  02  75  FF  45  --  0637B0
9A  45  62  36  FF  2E  45  64  36  FF  2E  18  74  C0  0B  D8  --  0637C0
3E  C5  2E  07  76  E9  00  01  B8  04  C4  83  00  5C  94  D5  --  0637D0
FF  FE  76  FF  18  00  68  01  6A  35  FF  02  75  FF  45  62  --  0637E0
74  C0  0B  D8  46  89  0C  C4  83  00  64  3B  E0  9A  FC  76  --  0637F0
94  D5  9A  45  62  36  FF  2E  45  64  36  FF  2E  18  01  FE  --  063800
45  64  36  FF  2E  07  3A  E9  00  02  B8  04  C4  83  00  5C  --  063810
F8  7E  C5  04  C4  83  00  5C  94  D5  9A  45  62  36  FF  2E  --  063820
00  6A  00  6A  20  74  03  0B  7D  80  26  74  00  0B  7D  80  --  063830
C5  0A  C4  83  00  64  28  52  9A  12  64  68  03  6A  00  6A  --  063840
5E  36  C4  2E  06  F9  E9  00  03  B8  00  02  05  C7  0A  7E  --  063850
00  6A  00  6A  20  74  04  3B  26  11  45  8B  F8  7E  C5  45  --  063860
C5  0A  C4  83  00  64  28  52  9A  12  65  68  03  6A  00  6A  --  063870
FF  2E  57  56  06  C9  E9  00  04  B8  00  02  05  C7  0A  7E  --  063880
```

442

```
00 05 F8 46 8B FA 76 FF 45 66 36 FF 2E 45 68 36 -- 063890
01 F0 46 C7 5E 5F 00 5C FF 6A 9A 04 00 68 50 08 -- 0638A0
03 F4 7E 8B 19 7D 40 F4 7E 83 00 00 F4 46 C7 00 -- 0638B0
00 00 F0 46 C7 05 74 00 1C 7D 80 FA 5E 8E F8 7E -- 0638C0
7E 83 09 74 00 0B 7D 80 F8 7E C5 E1 EB F4 46 FF -- 0638D0
00 01 05 C7 45 6A 3E C5 2E 03 73 E9 03 75 00 F0 -- 0638E0
C4 2E 05 F4 E9 03 7C 04 F4 7E 83 00 00 F4 46 C7 -- 0638F0
1E 8E 2E 45 6E 3E 03 2E E7 D1 F4 7E 8B 45 5E 36 -- 063900
FD 03 E7 D1 F4 7E 8B 0F 74 04 23 26 05 8B 45 70 -- 063910
FB D8 86 8D 16 01 00 68 00 01 FB C8 85 C7 1F 16 -- 063920
9A 01 6A 00 6A 45 66 36 FF 2E 45 68 36 FF 2E 50 -- 063930
5A 16 FB D8 86 8D F6 46 89 0E C4 83 00 5C F6 28 -- 063940
9B 05 D9 9B FB D4 BE C5 FB D6 96 89 FB D4 86 89 -- 063950
00 F2 46 C7 E0 5E D9 9B 03 FC 85 D9 9B E8 5E D9 -- 063960
9B FB D6 9E 8E FB D4 BE 03 02 E7 C1 F2 7E 8B 00 -- 063970
F2 46 FF 05 75 00 5C ED 94 9A 1D D8 9B E8 46 D9 -- 063980
9B 02 C4 83 00 5C ED A7 9A 50 48 F2 46 8B DF EB -- 063990
BE 03 02 E7 C1 F2 7E 8B 00 FF F2 46 C7 EC 5E D9 -- 0639A0
ED 94 9A 1D D8 9B E0 46 D9 9B FB D6 9E 8E FB D4 -- 0639B0
A7 9A 50 40 F2 46 8B DF EB F2 4E FF 05 75 00 5C -- 0639C0
05 E7 C1 F4 7E 8B E4 5E D9 9B 02 C4 83 00 5C ED -- 0639D0
D9 9B EC 46 D9 9B 45 74 1E 8E 2E 45 72 3E 03 2E -- 0639E0
E8 46 D9 9B 45 72 3E 03 2E 05 E7 C1 F4 7E 8B 1D -- 0639F0
72 3E 03 2E 05 E7 C1 F4 7E 8B 04 5D D9 9B 01 FE -- 063A00
2E 05 E7 C1 F4 7E 8B 08 5D D9 9B E4 46 D9 9B 45 -- 063A10
E0 46 D9 9B 0C 5D D9 9B E0 46 D9 9B 45 72 3E 03 -- 063A20
DD 9B 45 76 06 DF 2E 9B DC 5E D9 9B E8 66 D8 9B -- 063A30
FB B8 B6 DC 9B EC 66 D8 9B E4 46 D9 9B FB B8 9E -- 063A40
99 9A FB C0 86 DC 9B EC 46 D9 9B FB C0 9E DD 9B -- 063A50
2E 9B DA 46 89 08 C4 83 00 5C ED F9 9A 00 5C ED -- 063A60
83 02 E6 C1 DA 76 8B FB C0 9E DD 9B 45 76 06 DF -- 063A70
02 E7 C1 DA 7E 8B FB D6 86 8E FB D4 B6 03 04 C6 -- 063A80
9B 04 D8 26 9B 05 D9 9B FB D6 9E 8E FB D4 BE 03 -- 063A90
D8 9B E8 66 D8 9B FB C0 B6 DC 9B 45 78 06 DC 2E -- 063AA0
1E 8E 2E 45 72 3E 03 2E 05 E7 C1 F4 7E 8B DC 76 -- 063AB0
B8 9E DD 9B 45 80 06 DF 2E 9B 10 5D D9 9B 45 74 -- 063AC0
DD 9B FB B8 B6 DC 9B EC 66 D8 9B E4 46 D9 9B FB -- 063AD0
5C ED 99 9A FB C0 86 DC 9B EC 46 D9 9B FB C0 9E -- 063AE0
06 DF 2E 9B DA 46 89 08 C4 83 00 5C ED F9 9A 00 -- 063AF0

9E DD 9B 45 80 06 DF 2E 9B FB B0 9E DD 9B 45 82 -- 063B00
8E FB D4 BE 03 04 C7 83 02 E7 C1 DA 7E 8B FB B8 -- 063B10
FB C0 9E DD 9B FB B0 8E DC 9B 05 D9 9B FB D6 9E -- 063B20
86 DC 9B 05 D9 9B FB D4 BE 03 02 E7 C1 DA 7E 8B -- 063B30
66 D8 9B FB B8 B6 DC 9B 45 78 06 DC 2E 9B FB C0 -- 063B40
45 72 3E 03 2E 05 E7 C1 F4 7E 8B DC 76 D8 9B E8 -- 063B50
9B 45 80 06 DF 2E 9B 14 5D D9 9B 45 74 1E 8E 2E -- 063B60
B0 B6 DC 9B EC 66 D8 9B E4 46 D9 9B FB B0 9E DD -- 063B70
B8 8E DC 9B 45 82 06 DF 2E 9B FB B8 9E DD 9B FB -- 063B80
9A FB C0 86 DC 9B EC 46 D9 9B FB C0 9E DD 9B FB -- 063B90
9B DA 46 89 08 C4 83 00 5C ED F9 9A 00 5C ED 99 -- 063BA0
45 82 06 DF 2E 9B FB B8 9E DD 9B 45 80 06 DF 2E -- 063BB0
B6 03 04 C6 83 02 E6 C1 DA 76 8B FB C0 9E DD 9B -- 063BC0
FB D4 BE 03 02 E7 C1 DA 7E 8B FB D6 86 8E FB D4 -- 063BD0
04 D8 26 9B FB C0 8E DC 9B 05 D9 9B FB D6 9E 8E -- 063BE0
9B E8 66 D8 9B FB B8 B6 DC 9B 45 78 06 DC 2E 9B -- 063BF0
45 72 3E 03 2E 05 E7 C1 F4 7E 8B DC 76 D8 01 FE -- 063C00
2E 05 E6 C1 F4 76 8B 18 5D D9 9B 45 74 1E 8E 2E -- 063C10
2E 05 E7 C1 F4 7E 8B 45 74 06 8E 2E 45 72 36 03 -- 063C20
DC 2E 9B 14 64 D8 26 9B 18 45 D9 9B 45 72 3E 03 -- 063C30
```

```
2E 05 E7 C1 F4 7E 8B 45 78 0E DC 2E 9B 45 78 26 -- 063C40
C5 2E FC 9B E9 F4 46 FF 1C 5D D9 9B 45 72 3E 03 -- 063C50
04 F4 7E 83 00 00 F4 46 C7 00 00 05 C7 45 6A 3E -- 063C60
2E E7 D1 F4 7E 8B 45 5E 36 C4 2E 02 81 E9 03 7C -- 063C70
0F 74 04 23 26 05 8B 45 70 1E 8E 2E 45 6E 3E 03 -- 063C80
56 00 01 FB C8 85 C7 1F 16 FD 03 E7 D1 F4 7E 8B -- 063C90
F8 46 03 04 E0 C1 F4 46 8B 50 FB D2 86 8D 16 57 -- 063CA0
01 6A 50 00 1C 05 C3 8B 51 CA 8B D8 8B FA 56 8B -- 063CB0
3E 03 2E 05 E7 C1 F4 7E 8B 5E 5F 00 5C FF 6A 9A -- 063CC0
36 DC 2E 9B FB D2 86 DF 9B 45 74 1E 8E 2E 45 72 -- 063CD0
F4 46 8B 50 FB D2 86 8D 16 57 56 1D D9 9B 45 84 -- 063CE0
51 CA 8B D8 8B FA 56 8B F8 46 03 40 40 04 E0 C1 -- 063CF0
8B 5E 5F 00 5C FF 6A 9A 01 6A 50 00 1C 05 C3 8B -- 063D00
9B 45 74 1E 8E 2E 45 72 3E 03 2E 05 E7 C1 F4 7E -- 063D10
57 56 04 5D D9 9B 45 84 36 DC 2E 9B FB D2 86 DF -- 063D20
03 00 04 05 04 E0 C1 F4 46 8B 50 FB D2 86 8D 16 -- 063D30
50 00 1C 05 C3 8B 51 CA 8B D8 8B FA 56 8B F8 46 -- 063D40
2E 05 E7 C1 F4 7E 8B 5E 5F 00 5C FF 6A 9A 01 6A -- 063D50
2E 9B FB D2 86 DF 9B 45 74 1E 8E 2E 45 72 3E 03 -- 063D60
50 FB D2 86 8D 16 57 56 08 5D D9 9B 45 84 36 DC -- 063D70
8B FA 56 8B F8 46 03 00 06 05 04 E0 C1 F4 46 8B -- 063D80
5C FF 6A 9A 01 6A 50 00 1C 05 C3 8B 51 CA 8B D8 -- 063D90
8E 2E 45 72 3E 03 2E 05 E7 C1 F4 7E 8B 5E 5F 00 -- 063DA0
D9 9B 45 84 36 DC 2E 9B FB D2 86 DF 9B 45 74 1E -- 063DB0
04 E0 C1 F4 46 8B 50 FB D2 86 8D 16 57 56 0C 5D -- 063DC0
C3 8B 51 CA 8B D8 8B FA 56 8B F8 46 03 00 08 05 -- 063DD0
F4 7E 8B 5E 5F 00 5C FF 6A 9A 01 6A 50 00 1C 05 -- 063DE0
86 DF 9B 45 74 1E 8E 2E 45 72 3E 03 2E 05 E7 C1 -- 063DF0
57 56 10 5D D9 9B 45 8C 36 DC 2E 9B FB D2 01 FE -- 063E00
03 00 0A 05 04 E0 C1 F4 46 8B 50 FB D2 86 8D 16 -- 063E10
50 00 1C 05 C3 8B 51 CA 8B D8 8B FA 56 8B F8 46 -- 063E20
2E 05 E7 C1 F4 7E 8B 5E 5F 00 5C FF 6A 9A 01 6A -- 063E30
2E 9B FB D2 86 DF 9B 45 74 1E 8E 2E 45 72 3E 03 -- 063E40
50 FB D2 86 8D 16 57 56 14 5D D9 9B 45 8C 36 DC -- 063E50
8B FA 56 8B F8 46 03 00 0C 05 04 E0 C1 F4 46 8B -- 063E60
5C FF 6A 9A 01 6A 50 00 1C 05 C3 8B 51 CA 8B D8 -- 063E70
8E 2E 45 72 3E 03 2E 05 E7 C1 F4 7E 8B 5E 5F 00 -- 063E80
D9 9B 45 8C 36 DC 2E 9B FB D2 86 DF 9B 45 74 1E -- 063E90

04 E0 C1 F4 46 8B 50 FB D2 86 8D 16 57 56 18 5D -- 063EA0
C3 8B 51 CA 8B D8 8B FA 56 8B F8 46 03 00 0E 05 -- 063EB0
F4 7E 8B 5E 5F 00 5C FF 6A 9A 01 6A 50 00 1C 05 -- 063EC0
86 DF 9B 45 74 1E 8E 2E 45 72 3E 03 2E 05 E7 C1 -- 063ED0
D9 9B 45 94 36 DC 2E 9B 45 8C 26 DC 2E 9B FB D2 -- 063EE0
E3 9A FC 76 FF FE 76 FF FD 76 E9 F4 46 FF 1C 5D -- 063EF0
05 74 0A 3D 80 45 9C 3E C5 2E 04 C4 83 00 64 4E -- 063F00
C7 45 A0 3E C5 2E 00 4C 98 FB 9A 05 75 02 3D 80 -- 063F10
9A 50 FB D0 86 8D 16 50 FB C8 86 8D 16 00 01 05 -- 063F20
74 00 3D 83 45 A4 3E C5 2E 08 C4 83 00 2C B6 2C -- 063F30
9A 00 00 05 C7 45 A0 3E C5 2E 00 54 99 B2 9A 05 -- 063F40
CB 5E 5F C9 9B C0 2B 00 54 12 29 9A 00 2C CC CD -- 063F50
2E 57 56 00 02 05 C7 0A 7E C5 00 00 6A C8 57 56 -- 063F60
00 02 9A 0F 6A 00 6A 45 A8 36 FF 2E 45 AA 36 FF -- 063F70
0F 6A 45 A8 36 FF 2E 45 AA 36 FF 2E 5E 5F 00 8C -- 063F80
36 FF 2E 45 AA 36 FF 2E 06 C4 83 00 5C D0 03 9A -- 063F90
88 45 AC 3E C5 2E 04 C4 83 00 64 5C 0E 9A 45 A8 -- 063FA0
00 5C D3 8B 9A 45 A8 36 FF 2E 45 AA 36 FF 2E 05 -- 063FB0
00 6A 00 6A 17 74 00 AE 7E 83 AE 46 89 04 C4 83 -- 063FC0
00 01 B8 0A C4 83 00 64 28 52 9A 50 00 6A 00 6A -- 063FD0
3E C5 2E E4 2A 01 45 8A 45 B4 3E C5 2E 05 5F E9 -- 063FE0
```

444

```
3E  C5  2E  E4  2A  05  8A  45  B4  3E  C5  2E  05  88  45  B0  --  063FF0
06  75  00  3D  80  45  A8  3E  C5  2E  05  88  45  B8  01  FE  --  064000
00  64  4E  A1  9A  01  6A  18  90  68  05  2E  E9  00  02  B8  --  064010
89  98  46  89  00  90  05  9E  56  89  9C  46  89  04  C4  83  --  064020
45  C6  00  05  04  45  C7  00  80  05  C7  98  7E  C5  9A  56  --  064030
C6  01  00  0F  45  C7  03  0B  45  C6  00  0A  45  C6  03  02  --  064040
11  45  89  98  7E  C5  05  8B  45  5E  3E  C5  2E  0E  13  45  --  064050
96  7E  83  00  00  96  46  C7  00  0D  45  C6  00  0C  45  C6  --  064060
06  8E  2E  45  6E  36  03  2E  E6  D1  96  76  8B  2C  7F  03  --  064070
7E  C5  0C  74  04  23  26  05  8B  45  5E  3E  C5  2E  45  70  --  064080
2E  CE  EB  96  46  FF  0D  45  FE  98  7E  C5  0C  45  FE  98  --  064090
45  72  36  FF  2E  45  74  36  FF  2E  35  FF  45  5E  3E  C5  --  0640A0
83  45  6A  3E  C5  2E  08  C4  83  00  34  00  00  9A  FF  6A  --  0640B0
E9  03  7C  40  96  7E  83  00  00  96  46  C7  20  74  00  3D  --  0640C0
FF  00  1C  45  C6  9A  5E  8E  98  7E  03  96  7E  8B  02  C7  --  0640D0
E9  03  7C  04  96  7E  83  00  00  96  46  C7  E5  EB  96  46  --  0640E0
1E  8E  2E  45  72  3E  03  2E  05  E7  C1  96  7E  8B  02  A7  --  0640F0
00  5C  ED  99  9A  45  84  0E  DC  2E  9B  05  D9  9B  45  74  --  064100
96  46  8B  57  56  AA  46  89  08  C4  83  00  5C  ED  F9  9A  --  064110
C3  8B  51  CA  8B  D8  8B  9A  56  8B  98  46  03  04  E0  C1  --  064120
00  5C  FF  6A  9A  01  6A  50  AA  46  8D  16  50  00  1C  05  --  064130
1E  8E  2E  45  72  3E  03  2E  05  E7  C1  96  7E  8B  5E  5F  --  064140
5C  ED  99  9A  45  84  0E  DC  2E  9B  04  45  D9  9B  45  74  --  064150
46  8B  57  56  AA  46  89  08  C4  83  00  5C  ED  F9  9A  00  --  064160
CA  8B  D8  8B  9A  56  8B  98  46  03  40  40  04  E0  C1  96  --  064170
6A  9A  01  6A  50  AA  46  8D  16  50  00  1C  05  C3  8B  51  --  064180
45  72  3E  03  2E  05  E7  C1  96  7E  8B  5E  5F  00  5C  FF  --  064190
9A  45  84  0E  DC  2E  9B  08  45  D9  9B  45  74  1E  8E  2E  --  0641A0
56  AA  46  89  08  C4  83  00  5C  ED  F9  9A  00  5C  ED  99  --  0641B0
9A  56  8B  98  46  03  00  04  05  04  E0  C1  96  46  8B  57  --  0641C0
50  AA  46  8D  16  50  00  1C  05  C3  8B  51  CA  8B  D8  8B  --  0641D0
2E  05  E7  C1  96  7E  8B  5E  5F  00  5C  FF  6A  9A  01  6A  --  0641E0
DC  2E  9B  0C  45  D9  9B  45  74  1E  8E  2E  45  72  3E  03  --  0641F0
83  00  5C  ED  F9  9A  00  5C  ED  99  9A  45  84  0E  01  FE  --  064200
00  06  05  04  E0  C1  96  46  8B  57  56  AA  46  89  08  C4  --  064210
00  1C  05  C3  8B  51  CA  8B  D8  8B  9A  56  8B  98  46  03  --  064220
8B  5E  5F  00  5C  FF  6A  9A  01  6A  50  AA  46  8D  16  50  --  064230

9B  45  74  1E  8E  2E  45  72  3E  03  2E  05  E7  C1  96  7E  --  064240
F9  9A  00  5C  ED  99  9A  45  8C  0E  DC  2E  9B  10  45  D9  --  064250
E0  C1  96  46  8B  57  56  AA  46  89  08  C4  83  00  5C  ED  --  064260
8B  51  CA  8B  D8  8B  9A  56  8B  98  46  03  00  08  05  04  --  064270
5C  FF  6A  9A  01  6A  50  AA  46  8D  16  50  00  1C  05  C3  --  064280
8E  2E  45  72  3E  03  2E  05  E7  C1  96  7E  8B  5E  5F  00  --  064290
ED  99  9A  45  8C  0E  DC  2E  9B  14  45  D9  9B  45  74  1E  --  0642A0
8B  57  56  AA  46  89  08  C4  83  00  5C  ED  F9  9A  00  5C  --  0642B0
D8  8B  9A  56  8B  98  46  03  00  0A  05  04  E0  C1  96  46  --  0642C0
01  6A  50  AA  46  8D  16  50  00  1C  05  C3  8B  51  CA  8B  --  0642D0
3E  03  2E  05  E7  C1  96  7E  8B  5E  5F  00  5C  FF  6A  9A  --  0642E0
8C  0E  DC  2E  9B  18  45  D9  9B  45  74  1E  8E  2E  45  72  --  0642F0
46  89  08  C4  83  00  5C  ED  F9  9A  00  5C  ED  99  9A  45  --  064300
8B  98  46  03  00  0C  05  04  E0  C1  96  46  8B  57  56  AA  --  064310
46  8D  16  50  00  1C  05  C3  8B  51  CA  8B  D8  8B  9A  56  --  064320
E7  C1  96  7E  8B  5E  5F  00  5C  FF  6A  9A  01  6A  50  AA  --  064330
9B  1C  45  D9  9B  45  74  1E  8E  2E  45  72  3E  03  2E  05  --  064340
00  5C  ED  99  9A  45  8C  06  DC  2E  9B  45  94  0E  DC  2E  --  064350
96  46  8B  57  56  AA  46  89  08  C4  83  00  5C  ED  F9  9A  --  064360
CA  8B  D8  8B  9A  56  8B  98  46  03  00  0E  05  04  E0  C1  --  064370
6A  9A  01  6A  50  AA  46  8D  16  50  00  1C  05  C3  8B  51  --  064380
9A  76  FF  57  56  FD  50  E9  96  46  FF  5E  5F  00  5C  FF  --  064390
```

445

```
66  36  FF  2E  45  68  36  FF  2E  50  08  00  05  98  46  8B  --  0643A0
6A  05  6A  12  6A  5E  5F  00  5C  FF  6A  9A  04  00  68  45  --  0643B0
45  B6  36  FF  2E  45  B8  36  FF  2E  45  BA  36  FF  2E  01  --  0643C0
2E  50  52  0C  C4  83  00  5C  93  FD  9A  45  B4  36  FF  2E  --  0643D0
C4  83  00  5C  ED  6E  9A  45  62  36  FF  2E  45  64  36  FF  --  0643E0
45  64  36  FF  2E  53  75  00  3D  83  45  BC  3E  C5  2E  0A  --  0643F0
2E  04  C4  83  00  5C  94  D5  9A  45  62  36  FF  2E  01  FE  --  064400
FF  2E  45  C2  36  FF  2E  45  A8  36  FF  2E  45  AA  36  FF  --  064410
0C  C4  83  00  5C  97  5E  9A  50  B0  46  8D  16  45  C0  36  --  064420
64  28  52  9A  20  07  68  01  6A  01  6A  50  B0  46  8D  16  --  064430
00  F8  E9  03  74  01  AE  7E  83  AE  46  89  0A  C4  83  00  --  064440
46  C6  03  A4  46  C6  00  05  A2  46  C7  00  01  A0  46  C7  --  064450
8D  16  12  6A  00  00  A8  46  C7  18  00  A6  46  C7  01  A5  --  064460
36  FF  2E  45  B8  36  FF  2E  45  BA  36  FF  2E  50  A0  46  --  064470
52  0C  C4  83  00  5C  94  8D  9A  45  B4  36  FF  2E  45  B6  --  064480
00  5C  ED  6E  9A  45  62  36  FF  2E  45  64  36  FF  2E  50  --  064490
FB  33  E9  03  74  00  3D  83  45  BC  3E  C5  2E  0A  C4  83  --  0644A0
35  FF  02  75  FF  45  62  3E  C5  2E  00  6A  00  6A  00  6A  --  0644B0
2E  15  74  C0  0B  AC  46  89  0A  C4  83  00  64  3C  C2  9A  --  0644C0
C4  83  00  5C  94  D5  9A  45  62  36  FF  2E  45  64  36  FF  --  0644D0
01  6A  35  FF  02  75  FF  45  62  3E  C5  2E  FB  30  E9  04  --  0644E0
C4  83  00  64  3C  51  9A  9C  76  FF  9E  76  FF  18  00  68  --  0644F0
36  FF  2E  45  64  36  FF  2E  17  74  C0  0B  AC  46  89  0C  --  064500
2E  29  EB  00  03  B8  04  C4  83  00  5C  94  D5  9A  45  62  --  064510
C4  83  00  5C  94  D5  9A  45  62  36  FF  2E  45  64  36  FF  --  064520
C5  04  C4  83  00  64  4E  E3  9A  9C  76  FF  9E  76  FF  04  --  064530
C8  57  56  CB  5E  5F  C9  9B  C0  2B  00  01  05  C7  0A  7E  --  064540
36  FF  2E  07  BA  68  00  01  05  C7  0A  7E  C5  00  07  C0  --  064550
ED  6E  9A  50  F8  46  86  8D  16  45  C4  36  FF  2E  45  C6  --  064560
44  86  69  F8  44  86  89  F8  46  86  8B  0A  C4  83  00  5C  --  064570
96  89  F8  40  86  89  05  71  2D  D2  8C  C5  03  03  DC  F8  --  064580
8B  03  DC  F8  44  86  69  00  05  C6  F8  40  BE  C5  F8  42  --  064590
45  B6  36  FF  2E  00  07  FC  22  85  C7  1F  16  FD  03  F8  --  0645A0
16  C5  8B  F8  8B  03  DC  F8  44  86  69  45  B4  36  FF  2E  --  0645B0
08  C4  83  00  64  5B  B4  9A  50  52  05  C5  2D  C7  03  5A  --  0645C0
2E  00  6A  0A  6A  04  6A  50  F8  46  86  8D  16  07  BA  68  --  0645D0

C4  83  00  5C  A5  FF  9A  45  C8  36  FF  2E  45  CA  36  FF  --  0645E0
00  3D  80  F8  40  BE  C5  F8  44  86  89  F8  46  86  8B  10  --  0645F0
FF  2E  45  AA  36  FF  2E  57  56  00  B7  E9  03  75  01  FE  --  064600
5F  00  5C  FE  EC  9A  0F  6A  57  F8  42  B6  FF  45  A8  36  --  064610
E4  2A  01  45  8A  45  B4  3E  C5  2E  00  1C  FB  2F  9A  5E  --  064620
E4  2A  05  8A  45  B4  3E  C5  2E  05  88  45  B0  3E  C5  2E  --  064630
A8  36  FF  2E  45  AA  36  FF  2E  05  88  45  B8  3E  C5  2E  --  064640
05  88  45  AC  3E  C5  2E  04  C4  83  00  64  5C  0E  9A  45  --  064650
45  B8  36  FF  2E  45  BA  36  FF  2E  01  6A  05  6A  12  6A  --  064660
83  00  5C  93  FD  9A  45  B4  36  FF  2E  45  B6  36  FF  2E  --  064670
6E  9A  45  62  36  FF  2E  45  64  36  FF  2E  50  52  0C  C4  --  064680
0C  74  00  3D  83  45  BC  3E  C5  2E  0A  C4  83  00  5C  ED  --  064690
FF  0C  76  FF  1C  EB  00  02  B8  00  02  05  C7  0A  7E  C5  --  0646A0
7E  C5  0A  EB  C0  2B  04  C4  83  00  44  25  2F  9A  0A  76  --  0646B0
BA  C8  57  56  CB  5E  5F  C9  00  01  B8  00  02  05  C7  0A  --  0646C0
F8  46  86  8D  16  57  56  00  01  05  C7  0A  7E  C5  00  07  --  0646D0
36  FF  2E  5E  5F  00  8C  00  02  9A  07  BA  68  00  6A  50  --  0646E0
8C  C5  03  03  DC  F8  46  86  69  45  CC  36  FF  2E  45  CE  --  0646F0
FF  2E  08  C4  83  00  64  5B  B4  9A  50  52  07  B5  2D  D2  --  064700
F8  8B  03  DC  F8  46  86  69  45  D0  36  FF  2E  45  D2  36  --  064710
00  64  5B  B4  9A  50  52  07  61  2D  C7  03  5A  16  C5  8B  --  064720
46  96  69  E4  2A  01  45  8A  45  B4  3E  C5  2E  08  C4  83  --  064730
2A  F8  9D  85  88  FE  03  1F  16  FD  8B  F2  8B  03  DC  F8  --  064740
```

446

```
49 85 88 1F 16 FD 03 FA 8B 03 DC F8 46 96 69 E4 -- 064750
03 DC F8 46 96 69 E4 2A 05 8A 45 B4 3E C5 2E F8 -- 064760
F8 46 96 69 E4 2A F8 9C 85 88 1F 16 FD 03 FA 8B -- 064770
86 69 F8 48 85 88 FE 03 1F 16 FD 8B F2 8B 03 DC -- 064780
F8 F0 85 C6 FE 03 1F 16 FD 8B F0 8B 03 DC F8 46 -- 064790
DC F8 46 86 69 45 D4 36 FF 2E 45 D6 36 FF 2E 06 -- 0647A0
83 00 64 5B B4 9A 50 52 07 0F 2D D2 8C C5 03 03 -- 0647B0
FE 03 1F 16 FD 8B F0 8B 03 DC F8 46 86 69 08 C4 -- 0647C0
69 45 D8 36 FF 2E 45 DA 36 FF 2E 05 F9 42 85 C6 -- 0647D0
B4 9A 50 52 06 BD 2D D2 8C C5 03 03 DC F8 46 86 -- 0647E0
FD 03 F8 8B 03 DC F8 46 86 69 08 C4 83 00 64 5B -- 0647F0
8B 03 DC F8 46 86 69 01 FC 09 85 C6 1F 16 01 FE -- 064800
03 DC F8 46 86 69 00 FC 0A 85 C6 1F 16 FD 03 F8 -- 064810
DC F8 46 86 69 01 FC 0B 85 C6 1F 16 FD 03 F8 8B -- 064820
07 BA 68 00 07 FC 22 85 C7 1F 16 FD 03 F8 8B 03 -- 064830
DE 36 FF 2E 05 6A 0A 6A 04 6A 50 F8 46 86 8D 16 -- 064840
86 69 10 C4 83 00 5C A5 FF 9A 45 DC 36 FF 2E 45 -- 064850
52 05 C5 2D C7 03 5A 16 C5 8B F8 8B 03 DC F8 46 -- 064860
46 86 69 1B 74 C0 0B 04 C4 83 00 64 5C 0E 9A 50 -- 064870
64 5C 0E 9A 50 52 05 71 2D D2 8C C5 03 03 DC F8 -- 064880
B8 00 02 05 C7 0A 7E C5 0D 75 C0 0B 04 C4 83 00 -- 064890
F8 46 86 69 12 6A 00 1C FB 2F 9A 00 AB E9 00 01 -- 0648A0
2E 50 52 05 74 2D C7 03 5A 16 C5 8B F8 8B 03 DC -- 0648B0
C4 83 00 5C ED 6E 9A 45 B8 36 FF 2E 45 BA 36 FF -- 0648C0
05 C8 2D D2 8C C5 03 03 DC F8 46 86 69 54 6A 0A -- 0648D0
5C ED 6E 9A 45 E0 36 FF 2E 45 E2 36 FF 2E 50 52 -- 0648E0
2E 45 BA 36 FF 2E 01 6A 05 6A 12 6A 0A C4 83 00 -- 0648F0
FD 9A 45 E0 36 FF 2E 45 E2 36 FF 2E 45 B8 36 FF -- 064900
36 FF 2E 45 64 36 FF 2E 50 52 0C C4 83 00 5C 93 -- 064910
83 45 BC 3E C5 2E 0A C4 83 00 5C ED 6E 9A 45 62 -- 064920
10 EB 00 02 B8 00 02 05 C7 0A 7E C5 0C 74 00 3D -- 064930
C0 2B 04 C4 83 00 44 25 2F 9A 0A 76 FF 0C 76 FF -- 064940
2E 01 00 F6 46 C7 00 00 14 C8 57 56 CB 5E 5F C9 -- 064950
FF 6A 12 6A 00 F2 E9 03 74 00 3D 83 45 E4 3E C5 -- 064960
B6 36 FF 2E 45 EC 36 FF 2E 45 EE 36 FF 2E 02 6A -- 064970

50 52 0C C4 83 00 5C 93 FD 9A 45 B4 36 FF 2E 45 -- 064980
83 00 5C ED 6E 9A 45 E8 36 FF 2E 45 EA 36 FF 2E -- 064990
E9 00 01 B8 06 74 00 3D 83 45 F0 3E C5 2E 0A C4 -- 0649A0
89 FC 46 89 02 55 8B 05 8B 45 E8 3E C5 2E 05 73 -- 0649B0
36 FF 2E 1C 7D 04 FA 7E 83 00 00 FA 46 C7 FE 56 -- 0649C0
34 1F 2F 9A 02 6A FA 76 FF 45 72 36 FF 2E 45 74 -- 0649D0
FF 2E 50 F8 46 8D 16 DE EB FA 46 FF 08 C4 83 00 -- 0649E0
36 FF 2E 45 68 36 FF 2E 45 72 36 FF 2E 45 74 36 -- 0649F0
76 FF FE 76 FF 35 FF 45 5E 3E C5 2E 45 66 01 FE -- 064A00
FF 2E 45 EA 36 FF 2E 12 C4 83 00 5C 3F 8D 9A FC -- 064A10
45 F4 3E C5 2E 04 C4 83 00 5C 94 D5 9A 45 E8 36 -- 064A20
DE 9A 00 6A 00 44 53 B5 9A 0F 75 00 01 3D 05 8B -- 064A30
08 74 0A 3D 80 45 9C 3E C5 2E 02 C4 83 00 64 56 -- 064A40
04 8F E9 00 4C 9A 8E 9A 04 97 E9 03 74 02 3D 80 -- 064A50
E9 03 75 00 3D 83 45 F8 3E C5 2E 00 00 EE 46 C7 -- 064A60
46 0A 36 FF 2E 50 75 C0 0B 00 44 40 B9 9A 04 B5 -- 064A70
2E 46 04 36 FF 2E 46 06 36 FF 2E 46 08 36 FF 2E -- 064A80
FF 2E 45 FE 36 FF 2E 46 00 36 FF 2E 46 02 36 FF -- 064A90
52 9A 12 67 68 0B 6A 00 6A 00 6A 00 6A 45 FC 36 -- 064AA0
C7 07 75 01 F2 7E 83 F2 46 89 1A C4 83 00 64 28 -- 064AB0
00 01 EC 46 C7 00 01 EE 46 C7 05 EB 00 00 EE 46 -- 064AC0
06 C4 83 00 44 44 15 9A EE 76 FF 50 EC 46 8D 16 -- 064AD0
00 01 3D 05 8B 45 F4 3E C5 2E 21 74 00 EC 7E 83 -- 064AE0
64 56 DE 9A 00 6A 00 44 53 B5 9A 02 C4 E9 03 74 -- 064AF0
```

447

```
64 4E A1 9A 49 32 68 01 6A 02 B2 E9 02 C4 83 00 -- 064B00
3D C5 02 55 89 05 89 46 0C 3E C5 2E 04 C4 83 00 -- 064B10
10 3E C5 2E 00 44 3C DF 9A 49 2A 85 89 EE 46 8B -- 064B20
45 F4 3E C5 2E 00 44 C4 57 9A 05 74 00 3D 83 46 -- 064B30
FF 46 0C 3E C5 2E 49 32 68 1F 75 00 01 3D 05 8B -- 064B40
84 9A 46 14 36 FF 2E 46 16 36 FF 2E 35 FF 02 75 -- 064B50
00 6A 00 6A 00 6A 00 6A 00 6A 0A C4 83 00 64 3A -- 064B60
5C A2 86 9A 46 18 36 FF 2E 46 1A 36 FF 2E 00 6A -- 064B70
6A 00 6A 17 74 00 F4 7E 83 F4 46 89 10 C4 83 00 -- 064B80
03 B8 0A C4 83 00 64 28 52 9A 50 00 6A 00 6A 00 -- 064B90
FF 2E 00 64 22 FA 9A 00 54 C8 76 9A 03 83 E9 00 -- 064BA0
32 68 00 6A 00 6A 00 6A 45 B4 36 FF 2E 45 B6 36 -- 064BB0
6A 0A 6A 04 6A 35 FF 02 75 FF 46 0C 3E C5 2E 49 -- 064BC0
00 5C A6 44 9A 46 1C 36 FF 2E 46 1E 36 FF 2E 04 -- 064BD0
83 3D C5 46 0C 3E C5 2E 00 64 23 34 9A 1A C4 83 -- 064BE0
46 0C 3E C5 2E 00 2C AE 9D 9A 1A 75 00 49 30 BD -- 064BF0
E9 04 C4 83 00 64 4E E3 9A 35 FF 02 75 FF 01 FE -- 064C00
64 4E E3 9A 35 FF 02 75 FF 46 0C 3E C5 2E FD 9E -- 064C10
6A 00 6A 00 01 05 C7 46 20 3E C5 2E 04 C4 83 00 -- 064C20
FF 2E 46 26 36 FF 2E 00 6A 00 6A 00 6A 00 6A 00 -- 064C30
7E 83 F4 46 89 10 C4 83 00 5C A2 86 9A 46 24 36 -- 064C40
28 52 9A 50 00 6A 00 6A 00 6A 00 6A 17 74 00 F4 -- 064C50
6A FF 6A 12 6A 02 BE E9 00 04 B8 0A C4 83 00 64 -- 064C60
45 B6 36 FF 2E 45 EC 36 FF 2E 45 EE 36 FF 2E 01 -- 064C70
2E 50 52 0C C4 83 00 5C 93 FD 9A 45 B4 36 FF 2E -- 064C80
C4 83 00 5C ED 6E 9A 45 E8 36 FF 2E 45 EA 36 FF -- 064C90
6A 00 6A 00 6A 18 74 00 3D 83 45 F0 3E C5 2E 0A -- 064CA0
00 05 B8 0A C4 83 00 64 28 52 9A 35 FF 00 6A 00 -- 064CB0
FC 46 89 02 55 8B 05 8B 45 E8 3E C5 2E 02 66 E9 -- 064CC0
36 FF 2E 45 74 36 FF 2E 50 F8 46 8D 16 FE 56 89 -- 064CD0
60 36 FF 2E 45 66 36 FF 2E 45 68 36 FF 2E 45 72 -- 064CE0
83 00 5C 3E 8A 9A FC 76 FF 52 45 5E 36 FF 2E 45 -- 064CF0
5C 94 D5 9A 45 E8 36 FF 2E 45 EA 36 FF 2E 14 C4 -- 064D00
46 2A 36 FF 2E 50 02 E0 C1 F6 46 8B 04 C4 83 00 -- 064D10

6A 45 66 36 FF 2E 45 68 36 FF 2E 46 28 36 FF 2E -- 064D20
46 C7 F8 46 89 0E C4 83 00 5C F6 28 9A 01 6A 02 -- 064D30
C5 2E 50 F8 46 8D 16 61 7D 04 F0 7E 83 00 00 F0 -- 064D40
03 2E 09 E0 C1 F0 46 8B 35 FF 02 75 FF 46 30 3E -- 064D50
2E 00 6A F0 76 FF 50 52 46 2A 16 8B 2E 46 28 06 -- 064D60
D0 9A 01 45 68 09 6A 50 E4 2A 05 8A 46 2C 3E C5 -- 064D70
00 6A 00 6A 19 74 00 F8 7E 83 16 C4 83 00 64 40 -- 064D80
B8 0A C4 83 00 64 28 52 9A F8 76 FF 00 6A 00 6A -- 064D90
4B 9A 00 6A 00 6A 99 EB F0 46 FF 01 84 E9 00 06 -- 064DA0
36 FF 2E 57 56 00 54 C8 1C 9A 04 C4 83 00 44 5A -- 064DB0
28 36 FF 2E 46 2A 36 FF 2E 46 34 36 FF 2E 46 36 -- 064DC0
00 00 F0 46 C7 5E 5F 00 5C FE EC 9A 04 00 68 46 -- 064DD0
46 30 3E C5 2E 50 F8 46 8D 16 56 7D 04 F0 7E 83 -- 064DE0
46 34 06 03 2E 09 E0 C1 F0 46 8B 35 FF 02 75 FF -- 064DF0
C5 2E 01 6A F0 76 FF 50 52 46 36 16 8B 2E 01 FE -- 064E00
40 D0 9A 01 45 68 09 6A 50 E4 2A 05 8A 46 2C 3E -- 064E10
F8 9A F8 76 FF 0E 74 00 F8 7E 83 16 C4 83 00 64 -- 064E20
C5 2E A4 EB F0 46 FF 00 F2 E9 02 C4 83 00 2C D0 -- 064E30
2E 50 F8 46 8D 16 22 75 00 01 3D 05 8B 46 38 3E -- 064E40
FF 2E 46 42 36 FF 2E 46 44 36 FF 2E 46 46 36 FF -- 064E50
F8 46 8D 16 20 EB 46 3C 3E C5 2E 10 6A 46 40 36 -- 064E60
46 4E 36 FF 2E 46 44 36 FF 2E 46 46 36 FF 2E 50 -- 064E70
02 6A 35 FF 46 48 3E C5 2E 10 6A 46 4C 36 FF 2E -- 064E80
83 18 C4 83 00 64 40 D0 9A 01 43 68 0A 6A 00 6A -- 064E90
16 33 75 00 3D 83 46 50 3E C5 2E 86 75 00 F8 7E -- 064EA0
```

448

```
FF  2E  46  44  36  FF  2E  46  46  36  FF  2E  50  F8  46  8D  --  064EB0
FF  46  48  3E  C5  2E  10  6A  46  4C  36  FF  2E  46  4E  36  --  064EC0
83  00  64  40  D0  9A  01  43  68  0A  6A  00  6A  03  6A  35  --  064ED0
46  54  3E  C5  2E  FF  40  E9  03  74  00  F8  7E  83  18  C4  --  064EE0
F8  46  89  00  2C  AC  1C  9A  00  54  5B  06  9A  02  05  C6  --  064EF0
2E  0B  75  02  3D  80  05  74  0A  3D  80  45  9C  3E  C5  2E  --  064F00
C7  46  5C  3E  C5  2E  09  EB  00  00  05  C7  46  58  3E  C5  --  064F10
56  CB  5E  5F  C9  F8  46  8B  00  54  47  78  9A  00  02  05  --  064F20
60  36  FF  2E  46  62  36  FF  2E  12  6A  00  00  0C  C8  57  --  064F30
9A  50  00  54  05  05  8B  02  75  FF  46  0C  3E  C5  2E  46  --  064F40
FF  2E  45  B6  36  FF  2E  54  6A  0A  C4  83  00  5C  ED  6E  --  064F50
ED  6E  9A  35  FF  02  75  FF  46  0C  3E  C5  2E  45  B4  36  --  064F60
B4  36  FF  2E  45  B6  36  FF  2E  66  6A  0A  C4  83  00  5C  --  064F70
9A  50  00  66  05  05  8B  02  75  FF  46  0C  3E  C5  2E  45  --  064F80
85  C7  3D  C5  46  0C  3E  C5  2E  0A  C4  83  00  5C  ED  6E  --  064F90
46  0C  3E  C5  2E  05  8B  45  F8  3E  C5  2E  00  00  49  2C  --  064FA0
24  85  C7  3D  C5  46  0C  3E  C5  2E  02  22  85  89  3D  C5  --  064FB0
00  01  49  2E  85  C7  3D  C5  46  0C  3E  C5  2E  00  00  48  --  064FC0
3C  3E  C5  2E  0D  7F  00  01  3D  05  8B  45  F8  3E  C5  2E  --  064FD0
C5  2E  00  00  FE  46  C7  00  C6  E9  03  74  00  3D  83  46  --  064FE0
FC  46  C7  01  38  E9  03  7C  05  3B  FE  46  8B  45  F8  3E  --  064FF0
2E  46  64  3E  03  2E  F8  8B  06  FE  46  6B  00  00  01  FE  --  065000
2E  00  8C  E9  03  7C  04  45  3B  FC  46  8B  46  66  1E  8E  --  065010
6B  F6  56  89  F4  46  89  02  55  8B  05  8B  46  0C  3E  C5  --  065020
8B  46  66  06  8E  2E  46  64  36  03  2E  F0  8B  06  FE  46  --  065030
3E  C5  2E  E4  2A  05  8A  02  5C  8E  26  3C  03  26  FC  7E  --  065040
7E  03  48  24  84  FF  26  48  24  BC  8B  26  35  C4  46  0C  --  065050
8B  05  8B  46  0C  3E  C5  2E  47  24  85  88  F6  5E  8E  F4  --  065060
03  2E  F0  8B  06  FE  46  6B  F6  56  89  F4  46  89  02  55  --  065070
8E  26  3C  03  26  FC  7E  8B  46  66  06  8E  2E  46  64  36  --  065080
46  8B  F6  5E  8E  F4  7E  03  F8  8B  E4  2A  05  8A  02  5C  --  065090
3F  E9  FE  46  FF  FF  59  E9  FC  46  FF  02  24  85  88  FE  --  0650A0
3E  C5  2E  3D  75  00  01  3D  05  8B  46  38  3E  C5  2E  FF  --  0650B0

C7  48  24  85  89  3D  C5  46  0C  3E  C5  2E  05  8B  46  3C  --  0650C0
46  40  3E  C5  2E  5C  7D  01  00  FE  7E  81  00  00  FE  46  --  0650D0
7E  03  3D  C5  46  0C  3E  C5  2E  E4  2A  05  8A  FE  7E  03  --  0650E0
8B  46  48  3E  C5  2E  DA  EB  FE  46  FF  47  24  85  88  FE  --  0650F0
00  FE  46  C7  48  24  85  89  3D  C5  46  0C  3E  C5  2E  05  --  065100
FE  7E  03  46  4C  3E  C5  2E  1F  7D  01  00  FE  7E  81  00  --  065110
85  88  FE  7E  03  3D  C5  46  0C  3E  C5  2E  E4  2A  05  8A  --  065120
FF  3D  05  8B  46  68  3E  C5  2E  DA  EB  FE  46  FF  47  24  --  065130
FE  46  C7  72  74  00  3D  83  46  10  3E  C5  2E  7C  74  FF  --  065140
FA  7E  81  00  00  FA  46  C7  67  7D  04  FE  7E  83  00  00  --  065150
46  68  1E  C5  2E  C8  8B  E0  D1  FA  46  8B  56  7D  01  00  --  065160
8B  46  6E  06  8E  2E  46  6C  36  03  2E  02  E6  C1  37  8B  --  065170
05  8B  F9  03  02  5C  8E  26  3C  03  26  09  E7  C1  FE  7E  --  065180
8B  0A  E6  C1  35  8B  46  68  3E  C5  2E  46  0C  1E  C4  2E  --  065190
5F  8E  26  3F  03  26  FA  7E  03  FE  03  08  E7  C1  FE  7E  --  0651A0
2E  93  EB  FE  46  FF  A3  EB  FA  46  FF  03  24  85  88  02  --  0651B0
7E  83  00  00  FE  46  C7  5F  75  00  3D  83  46  10  3E  C5  --  0651C0
43  7D  01  00  FA  7E  81  00  00  FA  46  C7  54  7D  04  FE  --  0651D0
46  28  3E  03  2E  09  E7  C1  FE  7E  8B  E6  D1  FA  76  8B  --  0651E0
C5  2E  46  0C  1E  C4  2E  05  8B  FE  03  46  2A  1E  8E  2E  --  0651F0
08  E7  C1  FE  7E  8B  0A  E6  C1  35  8B  46  68  3E  01  FE  --  065200
03  24  85  88  02  5F  8E  26  3F  03  26  FA  7E  03  FE  03  --  065210
83  00  00  FE  46  C7  A6  EB  FE  46  FF  B6  EB  FA  46  FF  --  065220
7D  01  00  FA  7E  81  00  00  FA  46  C7  48  7D  04  FE  7E  --  065230
34  3E  03  2E  09  E7  C1  FE  7E  8B  E6  D1  FA  76  8B  37  --  065240
8B  46  0C  36  C4  2E  05  8B  FE  03  46  36  1E  8E  2E  46  --  065250
```

449

```
88 02 5C 8E 26 3C 03 26 FA 7E 03 08 E7 C1 FE 7E -- 065260
F8 46 C7 B2 EB FE 46 FF C2 EB FA 46 FF 43 24 85 -- 065270
C5 2E 79 7D 05 3B F8 46 8B 45 F8 3E C5 2E 00 00 -- 065280
04 FE 7E 83 00 00 FE 46 C7 6A 74 05 3B 46 68 3E -- 065290
46 8B 4E 7D 01 00 FA 7E 81 00 00 FA 46 C7 5F 7D -- 0652A0
46 6C 36 03 2E 02 E6 C1 F8 76 8B C8 8B E0 D1 FA -- 0652B0
8E 26 3C 03 26 09 E7 C1 FE 7E 8B 46 6E 06 8E 2E -- 0652C0
E6 C1 F8 76 8B 46 0C 1E C4 2E 05 8B F9 03 02 5C -- 0652D0
26 3F 03 26 FA 7E 03 FE 03 08 E7 C1 FE 7E 8B 0A -- 0652E0
EB FE 46 FF AB EB FA 46 FF 03 24 85 88 02 5F 8E -- 0652F0
C8 57 56 CB 5E 5F C9 C0 2B FF 7B E9 F8 46 FF 9B -- 065300
46 C7 38 7D 04 FC 7E 83 00 00 FC 46 C7 00 00 04 -- 065310
8B E6 D1 FE 76 8B 27 74 01 00 FE 7E 81 00 00 FE -- 065320
03 46 36 1E 8E 2E 46 34 3E 03 2E 09 E7 C1 FC 7E -- 065330
EB FE 46 FF 0D EB C0 2B 04 74 FE 46 3B 05 8B FE -- 065340
C8 57 56 CB 5E 5F C9 00 01 B8 C2 EB FC 46 FF D2 -- 065350
04 C4 83 00 64 4E A1 9A 11 00 68 01 6A 00 00 14 -- 065360
C7 00 44 43 96 9A 02 55 89 05 89 46 70 3E C5 2E -- 065370
8D 16 01 31 E9 03 7C 01 00 FE 7E 81 00 00 FE 46 -- 065380
35 FF 0C 5E 8E 0A 7E 03 E7 D1 FE 7E 8B 50 F8 46 -- 065390
E9 FF FF B8 06 7D C0 0B 06 C4 83 00 44 42 86 9A -- 0653A0
8E 0A 7E 03 E7 D1 FE 7E 8B 50 F4 46 8D 16 01 24 -- 0653B0
C0 0B 06 C4 83 00 44 42 86 9A 02 00 B5 FF 0C 5E -- 0653C0
FE 7E 8B 50 F0 46 8D 16 00 FE E9 FF FE B8 06 7D -- 0653D0
44 42 86 9A 04 00 B5 FF 0C 5E 8E 0A 7E 03 E7 D1 -- 0653E0
8D 16 00 D8 E9 FF FD B8 06 7D C0 0B 06 C4 83 00 -- 0653F0
0C 5E 8E 0A 7E 03 E7 D1 FE 7E 8B 50 EC 46 01 FE -- 065400
06 7D C0 0B 06 C4 83 00 44 42 86 9A 06 00 B5 FF -- 065410
7C 04 FC 7E 83 00 00 FC 46 C7 00 B2 E9 FF FC B8 -- 065420
2E 98 F8 45 8A FC 7E 03 1F 16 FD 8B 00 87 E9 03 -- 065430
3C 03 26 FC 7E 03 02 E7 C1 FE 7E 8B 46 70 36 C4 -- 065440
8A FC 7E 03 1F 16 FD 8B 01 00 85 88 02 5C 8E 26 -- 065450

26 3C 03 26 FC 7E 03 02 E7 C1 FE 7E 8B 98 F4 45 -- 065460
45 8A FC 7E 03 1F 16 FD 8B 05 00 85 88 02 5C 8E -- 065470
8E 26 3C 03 26 FC 7E 03 02 E7 C1 FE 7E 8B 98 F0 -- 065480
EC 45 8A FC 7E 03 1F 16 FD 8B 09 00 85 88 02 5C -- 065490
5C 8E 26 3C 03 26 FC 7E 03 02 E7 C1 FE 7E 8B 98 -- 0654A0
C5 E9 FE 46 FF FF 70 E9 FC 46 FF 0D 00 85 88 02 -- 0654B0
35 FF 02 75 FF 46 70 3E C5 2E 00 44 43 0B 9A FE -- 0654C0
08 C8 57 56 CB 5E 5F C9 04 C4 83 00 64 4E E3 9A -- 0654D0
B8 05 7E 00 FF 0A 7E 81 07 7C 00 0A 7E 83 00 00 -- 0654E0
F8 46 89 46 74 3E F7 2E 99 0A 46 8B 69 EB FF FF -- 0654F0
76 3E F7 2E 99 C7 2B 0A 46 8B F8 8B 64 F8 46 6B -- 065500
F8 8B 64 F8 46 6B F0 8B 0A FA 46 6B FA 46 89 46 -- 065510
83 00 00 FE 46 C7 FC 46 89 C6 2B C7 2B 0A 46 8B -- 065520
45 8B 1F 16 FD 03 E7 D1 FE 7E 8B 1F 7D 03 FE 7E -- 065530
FF 05 88 0E 5E 8E 0C 7E 03 FE 7E 8B 00 30 05 F8 -- 065540
5E 5F C9 C0 2B 20 03 45 C6 0C 7E C5 DB EB FE 46 -- 065550
7C 36 FF 2E 46 7E 36 FF 2E 00 00 06 C8 57 56 CB -- 065560
00 64 07 9A 9A 46 78 36 FF 2E 46 7A 36 FF 2E 46 -- 065570
FF FF B8 05 75 C2 0B FC 56 89 FA 46 89 08 C4 83 -- 065580
FC 76 FF 3B 7D 05 FE 7E 83 00 00 FE 46 C7 56 EB -- 065590
2E 46 84 3E 03 2E E7 D1 FE 7E 8B 01 6A FA 76 FF -- 0655A0
80 3E 03 2E 02 E7 C1 FE 7E 8B 35 FF 46 86 1E 8E -- 0655B0
00 64 35 3F 9A 35 FF 02 75 FF 46 82 1E 8E 2E 46 -- 0655C0
64 9A FA 76 FF FC 76 FF BF EB FE 46 FF 0C C4 83 -- 0655D0
8B 55 57 56 CB 5E 5F C9 C0 2B 04 C4 83 00 64 0A -- 0655E0
46 80 3E C5 2E 02 55 8B 05 8B 46 70 3E C5 2E EC -- 0655F0
55 8B 05 8B 46 70 3E C5 2E 02 55 89 05 89 01 FE -- 065600
```

450

```
2E  06  55  89  04  45  89  46  80  3E  C5  2E  01  00  05  02  --  065610
80  3E  C5  2E  05  00  05  02  55  8B  05  8B  46  70  3E  C5  --  065620
55  8B  05  8B  46  70  3E  C5  2E  0A  55  89  08  45  89  46  --  065630
2E  0E  55  89  0C  45  89  46  80  3E  C5  2E  09  00  05  02  --  065640
80  3E  C5  2E  0D  00  05  02  55  8B  05  8B  46  70  3E  C5  --  065650
C8  57  56  CB  5E  5F  C9  C0  2B  12  55  89  10  45  89  46  --  065660
00  FE  46  C7  01  19  E9  03  74  00  0A  7E  83  00  00  04  --  065670
8B  45  5E  36  C4  2E  01  0B  E9  03  7C  04  FE  7E  83  00  --  065680
05  8B  45  70  1E  8E  2E  45  6E  3E  03  2E  E7  D1  FE  7E  --  065690
FC  7E  81  00  00  FC  46  C7  00  E7  E9  03  75  04  23  26  --  0656A0
C1  FE  7E  8B  E6  D1  FC  76  8B  00  D8  E9  03  7C  01  00  --  0656B0
05  8B  FE  03  46  2A  1E  8E  2E  46  28  3E  03  2E  09  E7  --  0656C0
09  E7  C1  FE  7E  8B  E6  D1  FC  76  8B  1E  75  FC  46  3B  --  0656D0
46  3B  05  8B  FE  03  46  36  1E  8E  2E  46  34  3E  03  2E  --  0656E0
C7  01  00  FC  46  C7  00  00  05  C7  0C  7E  C5  14  74  FC  --  0656F0
04  FE  7E  83  00  00  FE  46  C7  00  82  E9  00  04  FE  46  --  065700
6E  3E  03  2E  E7  D1  FE  7E  8B  45  5E  36  C4  2E  77  7D  --  065710
FC  46  C7  57  74  04  23  26  05  8B  45  70  1E  8E  2E  45  --  065720
5E  8B  E7  D1  FC  7E  8B  4B  7D  01  00  FC  7E  81  00  00  --  065730
DF  03  46  36  06  8E  2E  46  34  1E  03  2E  09  E3  C1  FE  --  065740
46  28  3E  03  2E  09  E7  C1  FE  7E  8B  E6  D1  FC  76  8B  --  065750
7E  C5  11  74  07  3B  26  05  8B  FE  03  46  2A  1E  8E  2E  --  065760
FF  00  04  FE  46  C7  01  00  FC  46  C7  00  00  05  C7  0C  --  065770
FF  FF  1E  E9  FC  46  FF  83  EB  FE  46  FF  AE  EB  FC  46  --  065780
3E  C5  2E  11  74  00  3D  83  0C  7E  C5  FE  EC  E9  FE  46  --  065790
5F  C9  00  00  05  C7  0C  7E  C5  07  7E  00  3D  83  45  F8  --  0657A0
6A  40  00  6C  1F  C0  00  24  75  4E  00  24  75  4C  CB  5E  --  0657B0
00  02  00  24  74  40  00  24  3D  14  00  24  77  0E  00  24  --  0657C0
00  00  00  00  00  03  00  04  3F  E0  00  00  00  00  00  00  --  0657D0
00  00  00  00  40  C3  88  00  00  00  00  00  40  59  00  00  --  0657E0
00  6C  29  F6  00  24  3D  56  00  24  76  C0  40  DD  4C  00  --  0657F0

86  A2  00  6C  1F  D3  00  6C  1F  D4  00  6C  1F  D5  01  FE  --  065800
87  E2  00  6C  1F  22  00  6C  1F  CE  00  6C  1F  D2  00  3C  --  065810
1F  4B  00  6C  1F  3E  00  6C  1F  31  00  6C  1F  28  00  3C  --  065820
91  14  00  6C  1F  E4  00  6C  1F  58  00  6C  1F  52  00  6C  --  065830
86  A0  00  6C  20  46  00  3C  86  F6  00  6C  20  38  00  3C  --  065840
1F  83  00  6C  1F  72  00  6C  1F  61  00  24  57  BC  00  3C  --  065850
1F  85  00  3C  A5  4C  00  6C  20  4E  00  6C  1F  84  00  6C  --  065860
1F  9D  00  6C  27  C4  00  6C  1F  95  00  6C  1F  8D  00  6C  --  065870
4D  5C  00  24  76  FA  00  24  3D  48  00  3C  6E  86  00  6C  --  065880
76  FE  00  3C  B4  2A  00  3C  B3  16  00  24  77  8E  00  24  --  065890
92  54  00  3C  91  12  00  3C  B3  2A  00  3C  B3  14  00  24  --  0658A0
55  5C  00  3C  90  C6  00  24  3D  4C  00  24  3D  4E  00  3C  --  0658B0
00  64  00  6C  20  4A  00  24  57  C0  00  24  57  BE  00  24  --  0658C0
1F  B6  00  6C  20  52  00  6C  1F  B3  00  6C  1F  A4  00  0A  --  0658D0
FF  2E  01  6A  FF  6A  12  6A  00  00  14  C8  57  56  00  6C  --  0658E0
36  FF  2E  65  82  36  FF  2E  65  84  36  FF  2E  65  86  36  --  0658F0
EE  46  8D  16  50  52  0C  C4  83  00  5C  93  FD  9A  65  80  --  065900
74  00  02  3D  FA  46  8B  0A  C4  83  00  5C  ED  6E  9A  50  --  065910
C4  83  00  44  56  66  9A  FC  76  FF  0D  74  00  14  3D  24  --  065920
C7  0A  7E  C5  00  01  05  C7  65  88  3E  C5  2E  1B  EB  02  --  065930
8D  16  00  00  05  C7  65  88  3E  C5  2E  09  EB  00  02  05  --  065940
5F  C9  EC  46  89  04  C4  83  00  5C  94  D5  9A  50  EE  46  --  065950
00  05  C7  65  8C  3E  C5  2E  00  03  98  C8  57  56  CB  5E  --  065960
84  36  FF  2E  65  86  36  FF  2E  02  6A  FF  6A  12  6A  00  --  065970
00  5C  93  FD  9A  65  80  36  FF  2E  65  82  36  FF  2E  65  --  065980
83  00  5C  ED  6E  9A  50  98  46  8D  16  50  52  0C  C4  83  --  065990
FF  2E  65  84  36  FF  2E  65  86  36  FF  2E  12  6A  0A  C4  --  0659A0
0A  C4  83  00  5C  ED  6E  9A  65  90  36  FF  2E  65  92  36  --  0659B0
```

```
FD 02 86 8D 16 57 56 00 01 05 C7 65 94 3E C5 2E -- 0659C0
98 46 8B 5E 5F 00 8C 00 02 9A 02 4E 68 00 6A 50 -- 0659D0
00 FC 72 86 C7 FD 08 96 89 FD 06 86 89 9A 56 8B -- 0659E0
72 B6 FF 50 FD 02 86 8D 16 50 FC DE 86 8D 16 00 -- 0659F0
65 8C 3E C5 2E 0A C4 83 00 5C 48 F8 9A FC 01 FE -- 065A00
02 C4 83 00 44 56 66 9A 50 09 74 00 3D 83 05 89 -- 065A10
FF 2E 50 AA 46 8D 16 00 01 05 C7 65 98 3E C5 2E -- 065A20
83 00 5C 4D 20 9A 50 FD 02 86 8D 16 57 65 9A 36 -- 065A30
9A 50 09 74 00 3D 83 05 89 65 8C 3E C5 2E 0C C4 -- 065A40
E4 2A 04 8A 65 9C 36 C5 2E 02 C4 83 00 44 56 66 -- 065A50
46 89 02 C4 83 00 64 4E 56 9A 50 07 C7 6B F8 8B -- 065A60
6B F8 8B E4 2A 04 8A 65 A0 36 C5 2E 96 56 89 94 -- 065A70
89 FC 6E 86 89 02 C4 83 00 64 4E 56 9A 50 28 C7 -- 065A80
16 50 52 94 76 FF 96 76 FF 00 6A 00 6A FC 70 96 -- 065A90
00 5C 4E 3D 9A 50 FD 02 86 8D 16 50 FC 75 86 8D -- 065AA0
50 09 74 00 3D 83 05 89 65 8C 3E C5 2E 14 C4 83 -- 065AB0
C5 2E 00 00 FC 68 86 C7 02 C4 83 00 44 56 66 9A -- 065AC0
68 86 6B 25 74 FC 68 86 3B E4 2A 05 8A 65 9C 3E -- 065AD0
03 2E E7 D1 3D 8B 96 5E 8E 94 7E 03 F8 8B 07 FC -- 065AE0
FC 68 86 FF 00 02 05 C7 65 A6 1E 8E 2E 65 A4 3E -- 065AF0
65 A8 3E C5 2E FC 6A 86 89 05 8B 94 7E C5 CC EB -- 065B00
00 01 05 C7 65 AC 3E C5 2E 0B 75 00 02 3D 05 89 -- 065B10
45 8B 94 7E C5 00 02 05 C7 65 AC 3E C5 2E 09 EB -- 065B20
35 FF 50 FF 50 86 8D 16 05 89 65 B0 3E C5 2E 04 -- 065B30
C5 2E 0A C4 83 00 5C 4D 59 9A 50 FD 02 86 8D 16 -- 065B40
00 44 56 66 9A 50 09 74 00 3D 83 05 89 65 8C 3E -- 065B50
C4 83 00 5C 49 0B 9A 50 FD 02 86 8D 16 02 C4 83 -- 065B60
86 89 04 C4 83 00 5C 94 D5 9A 50 98 46 8D 16 04 -- 065B70
04 C4 83 00 64 4E E3 9A 94 76 FF 96 76 FF FC 6C -- 065B80
04 C4 83 00 64 4E E3 9A FC 6E B6 FF FC 70 B6 FF -- 065B90

36 FF 2E 65 B6 36 FF 2E 50 FF 6E 86 8D 16 68 6A -- 065BA0
76 86 8D 16 50 52 08 C4 83 00 5C 91 A4 9A 65 B4 -- 065BB0
74 00 FC DC BE 83 0A C4 83 00 5C ED 6E 9A 50 FC -- 065BC0
16 12 6A 02 C4 83 00 44 56 66 9A FC DC B6 FF 0C -- 065BD0
9A 65 84 36 FF 2E 65 86 36 FF 2E 50 FC CA 86 8D -- 065BE0
00 7E C8 57 56 CB 5E 5F C9 0A C4 83 00 5C ED 6E -- 065BF0
6A 12 6A 00 00 EC 46 C7 00 00 EA 46 C7 00 01 FE -- 065C00
00 1E 05 65 98 06 8B 2E 65 9A 36 FF 2E 01 6A 01 -- 065C10
00 5C 94 45 9A 65 B4 36 FF 2E 65 B6 36 FF 2E 50 -- 065C20
83 00 5C ED 6E 9A 50 EE 46 8D 16 50 52 0C C4 83 -- 065C30
00 44 56 66 9A FC 76 FF 0B 74 00 FC 7E 83 0A C4 -- 065C40
6A EC 56 89 EA 46 89 F0 56 8B EE 46 8B 02 C4 83 -- 065C50
B1 E5 9A 65 B8 36 FF 2E 65 BA 36 FF 2E 50 52 00 -- 065C60
74 00 3D 83 05 89 65 8C 3E C5 2E 0A C4 83 00 34 -- 065C70
EA 76 FF EC 76 FF 02 C4 83 00 44 56 66 9A 50 09 -- 065C80
9A 05 89 65 BC 3E C5 2E 04 C4 83 00 64 43 A9 9A -- 065C90
65 C0 36 FF 2E 65 C2 36 FF 2E 57 56 00 44 5E 3A -- 065CA0
36 FF 2E 68 6A 5E 5F 00 8C 00 02 9A 0A 6A 00 6A -- 065CB0
65 B6 36 FF 2E 50 00 1E 05 65 98 06 8B 2E 65 9A -- 065CC0
16 50 52 08 C4 83 00 5C 91 A4 9A 65 B4 36 FF 2E -- 065CD0
8D 16 12 6A 0A C4 83 00 5C ED 6E 9A 50 82 46 8D -- 065CE0
ED 6E 9A 65 C4 36 FF 2E 65 C6 36 FF 2E 50 D6 46 -- 065CF0
CA 36 FF 2E 50 82 46 8D 16 66 6A 0A C4 83 00 5C -- 065D00
76 FF 0A C4 83 00 5C ED 6E 9A 65 C8 36 FF 2E 65 -- 065D10
CE 36 FF 2E 04 C4 83 00 5C 60 DD 9A EA 76 FF EC -- 065D20
65 B8 36 FF 2E 65 BA 36 FF 2E 65 CC 36 FF 2E 65 -- 065D30
EE 46 8D 16 18 75 C0 0B 08 C4 83 00 4C 0B 23 9A -- 065D40
44 56 66 9A 12 47 68 04 C4 83 00 5C 94 D5 9A 50 -- 065D50
11 75 00 03 3D 05 8B 65 D0 3E C5 2E 02 C4 83 00 -- 065D60
```

452

```
EB 02 C4 83 00 14 55 74 9A 00 6A 00 44 5A FD 9A -- 065D70
00 5C 94 D5 9A 50 EE 46 8D 16 00 4C 02 61 9A 05 -- 065D80
8B 55 57 56 CB 5E 5F C9 00 44 57 C9 9A 04 C4 83 -- 065D90
8B 65 A8 3E C5 2E 00 00 05 C7 65 8C 3E C5 2E EC -- 065DA0
02 05 C7 65 A6 1E 8E 2E 65 A4 3E 03 2E E7 D1 3D -- 065DB0
2E 00 44 5E 3A 9A 00 02 05 C7 65 BC 3E C5 2E 00 -- 065DC0
00 44 5A FD 9A 22 75 00 03 3D 05 8B 65 D0 3E C5 -- 065DD0
A8 3E C5 2E 0B 6A 00 44 57 40 9A 00 44 5D 77 9A -- 065DE0
00 BC 9A 4E EB 04 C4 83 00 5C B3 44 9A 35 FF 65 -- 065DF0
FF 2E 65 8E 36 FF 2E 00 4C 02 61 9A 00 4C 01 FE -- 065E00
C4 83 00 64 40 D0 9A 6F 6A 03 6A 16 6A 65 8C 36 -- 065E10
6A 03 6A 13 6A 65 8C 36 FF 2E 65 8E 36 FF 2E 0A -- 065E20
C5 2E 00 44 57 40 9A 0A C4 83 00 64 40 D0 9A 6F -- 065E30
5E 5F C9 02 C4 83 00 5C B3 DE 9A 35 FF 65 A8 3E -- 065E40
10 FE 7E 83 00 00 FE 46 C7 00 00 02 C8 57 56 CB -- 065E50
FF 05 88 FE 46 8B FE 7E 03 65 D4 3E C5 2E 12 7D -- 065E60
3E C5 2E 00 00 05 C7 65 D8 3E C5 2E E8 EB FE 46 -- 065E70
2E 05 89 65 E0 3E C5 2E C0 2B 00 00 05 C7 65 DC -- 065E80
2E 00 01 05 C7 65 E4 3E C5 2E 05 89 65 8C 3E C5 -- 065E90
00 05 C7 65 EC 3E C5 2E 00 00 05 C7 65 E8 3E C5 -- 065EA0
C7 65 AC 3E C5 2E 00 00 05 C7 65 94 3E C5 2E 00 -- 065EB0
F0 3E C5 2E 00 02 05 C7 65 A8 3E C5 2E 00 01 05 -- 065EC0
C5 2E 00 01 05 C7 65 F4 3E C5 2E 00 00 05 C7 65 -- 065ED0
00 00 05 C7 65 FC 3E C5 2E 00 00 05 C7 65 F8 3E -- 065EE0
05 C7 66 04 3E C5 2E 00 01 05 C7 66 00 3E C5 2E -- 065EF0
66 0C 3E C5 2E 00 00 05 C7 66 08 3E C5 2E 00 01 -- 065F00
3E C5 2E 00 00 05 C7 66 10 3E C5 2E 00 00 05 C7 -- 065F10
2E 00 00 05 C7 66 18 3E C5 2E 00 00 05 C7 66 14 -- 065F20
00 05 C7 66 20 3E C5 2E 00 00 05 C7 66 1C 3E C5 -- 065F30

C7 66 28 3E C5 2E 00 00 05 C7 66 24 3E C5 2E 00 -- 065F40
32 36 FF 2E 00 00 05 C7 66 2C 3E C5 2E 00 00 05 -- 065F50
06 C4 83 00 64 24 00 9A 01 6A 66 30 36 FF 2E 66 -- 065F60
2E 65 8E 36 FF 2E 18 75 06 3D 80 66 34 3E C5 2E -- 065F70
83 00 64 40 D0 9A 6F 6A 03 6A 35 6A 65 8C 36 FF -- 065F80
66 38 3E C5 2E E4 2A 05 8A 66 3C 3E C5 2E 0A C4 -- 065F90
08 3D 00 02 2D E4 2A 05 8A 66 34 3E C5 2E 05 89 -- 065FA0
4D 82 4D 96 4D 5C A7 FF 2E D8 8B E0 D1 4E 77 00 -- 065FB0
C5 2E 4D 6E 4D A1 4D A1 4D A1 4D A1 4D A1 4D 6E -- 065FC0
00 13 05 C7 66 40 3E C5 2E 00 04 05 C7 65 D0 3E -- 065FD0
66 40 3E C5 2E 00 03 05 C7 65 D0 3E C5 2E 31 EB -- 065FE0
EB 00 02 05 C7 65 D0 3E C5 2E 1D EB 00 0B 05 C7 -- 065FF0
40 3E C5 2E 00 01 05 C7 65 D0 3E C5 2E 09 01 FE -- 066000
2E 0B 74 00 3D 83 66 44 3E C5 2E 00 16 05 C7 66 -- 066010
C7 66 48 3E C5 2E 09 EB 00 01 05 C7 66 48 3E C5 -- 066020
3E C5 2E 00 00 14 C8 57 56 CB 5E 5F C9 00 00 05 -- 066030
66 4C 36 FF 2E 66 4E 36 FF 2E 00 00 05 C7 65 8C -- 066040
83 00 4C 15 55 9A 65 B8 36 FF 2E 65 BA 36 FF 2E -- 066050
D9 9B 66 50 3E C5 2E EC 5E DD 9B EE D9 9B 08 C4 -- 066060
54 3E C5 2E 20 75 00 5C ED 94 9A EC 5E DC 9B 05 -- 066070
5C 3E C5 2E 1D D9 9B 66 50 3E C5 2E 05 D9 9B 66 -- 066080
60 3E C5 2E 1D D9 9B 66 58 3E C5 2E 05 D9 9B 66 -- 066090
05 D9 9B 66 64 3E C5 2E F8 5E D9 9B 05 D9 9B 66 -- 0660A0
0A 74 00 03 3D 05 8B 65 D0 3E C5 2E FC 5E D9 9B -- 0660B0
2E 65 8E 36 FF 2E 0E 74 00 3D 83 66 48 3E C5 2E -- 0660C0
36 FF 2E 65 8E 36 FF 2E 0C EB 04 6A 65 8C 36 FF -- 0660D0
C4 83 00 2C 00 00 9A 50 F8 46 8D 16 02 6A 65 8C -- 0660E0
56 66 9A 35 FF 0A 74 00 3D 83 65 8C 3E C5 2E 0A -- 0660F0
2E 65 8E 36 FF 2E 00 1C FA 5A 9A 02 C4 83 00 44 -- 066100
C5 2E 06 C4 83 00 2C 11 03 9A 01 6A 65 8C 36 FF -- 066110
```

453

```
83 00 44 56 66 9A 35 FF 0A 74 00 3D 83 65 8C 3E  --  066120
8E 36 FF 2E 02 C4 83 00 54 C6 90 9A 02 6A 02 C4  --  066130
64 40 D0 9A 6F 6A 03 6A 16 6A 65 8C 36 FF 2E 65  --  066140
C5 2E 2E 74 0A 3D 80 66 34 3E C5 2E 0A C4 83 00  --  066150
2E 1D 75 00 01 3D 05 74 00 04 3D 05 8B 65 D0 3E  --  066160
6A 50 F4 46 89 C0 2B 65 8C 36 FF 2E 65 8E 36 FF  --  066170
8E 36 FF 2E 0A C4 83 00 64 40 D0 9A 01 48 68 03  --  066180
00 6A 00 6A 00 6A 00 6A 00 6A 65 8C 36 FF 2E 65  --  066190
00 64 40 D0 9A 01 43 68 0A 6A 01 6A 00 6A 00 6A  --  0661A0
3E C5 2E 65 8C 36 FF 2E 65 8E 36 FF 2E 18 C4 83  --  0661B0
64 40 D0 9A 01 F5 68 03 6A 50 05 8B 05 FF 65 DC  --  0661C0
35 FF 0A 74 00 3D 83 65 8C 3E C5 2E 0A C4 83 00  --  0661D0
2E 05 8B 65 DC 3E C5 2E 02 C4 83 00 44 56 66 9A  --  0661E0
65 8C 36 FF 2E 65 8E 36 FF 2E 05 89 66 68 3E C5  --  0661F0
02 68 03 6A 50 05 FF 05 8B 65 E0 3E C5 2E 01 FE  --  066200
3D 83 65 8C 3E C5 2E 0A C4 83 00 64 40 D0 9A 02  --  066210
3E C5 2E 02 C4 83 00 44 56 66 9A 35 FF 0A 74 00  --  066220
FF 2E 65 8E 36 FF 2E 36 75 00 04 3D 05 8B 65 D0  --  066230
F6 76 FF 50 F6 46 8D 16 50 F6 46 8D 16 65 8C 36  --  066240
40 D0 9A 01 43 68 0A 6A 03 6A F6 76 FF F6 76 FF  --  066250
2E 14 EB 16 05 C6 66 6C 3E C5 2E 18 C4 83 00 64  --  066260
66 6C 3E C5 2E EA 75 00 03 3D 05 8B 65 D0 3E C5  --  066270
36 FF 2E 65 8C 36 FF 2E 65 8E 36 FF 2E 0B 05 C6  --  066280
C4 83 00 64 40 D0 9A 6E 6A 05 6A 01 6A 57 66 6E  --  066290
56 66 9A 35 FF 0A 74 00 3D 83 65 8C 3E C5 2E 0E  --  0662A0
9A 07 74 00 3D 83 65 88 3E C5 2E 02 C4 83 00 44  --  0662B0
9A 00 6A 00 6A 00 44 4B 3E 9A 29 EB 00 44 49 9F  --  0662C0
7E 00 3D 83 66 68 3E C5 2E 04 C4 83 00 44 5A 4B  --  0662D0

9B 04 C4 83 00 4C 06 B7 9A 57 66 6A 36 FF 2E 0E  --  0662E0
C7 00 00 FC 46 C7 00 00 0C C8 57 56 CB 5E 5F C9  --  0662F0
3D 83 65 D8 3E C5 2E 00 00 F6 46 C7 00 00 FE 46  --  066300
3E C5 2E F4 46 89 C0 2B 02 EB 00 01 B8 05 75 00  --  066310
FF 2E 65 82 36 FF 2E 57 56 24 74 00 3D 83 65 D8  --  066320
9A 66 6A 66 70 36 FF 2E 66 72 36 FF 2E 65 80 36  --  066330
66 74 3E C5 2E 00 64 21 BA 9A 5E 5F 00 5C FE EC  --  066340
66 70 36 FF 2E 66 72 36 FF 2E 08 C2 68 00 05 C6  --  066350
2E 00 01 05 C7 0A 7E C5 06 C4 83 00 64 48 1E 9A  --  066360
C4 83 00 64 52 82 9A 66 78 36 FF 2E 66 7A 36 FF  --  066370
01 6A 50 F6 46 8D 16 00 44 4B F1 9A F6 46 89 04  --  066380
36 FF 2E 0A C4 83 00 64 40 D0 9A 02 04 68 03 6A  --  066390
FF 04 C4 83 00 4C 13 CD 9A 65 80 36 FF 2E 65 82  --  0663A0
FA 46 C7 04 C4 83 00 44 46 88 9A 0A 76 FF 0C 76  --  0663B0
03 2E E7 D1 FA 7E 8B 18 74 01 00 FA 7E 81 00 00  --  0663C0
EB FA 46 FF 00 01 05 C7 65 A6 1E 8E 2E 65 A4 3E  --  0663D0
8B 65 88 3E C5 2E 00 00 05 C7 65 BC 3E C5 2E E1  --  0663E0
6A FF 6A 12 6A 00 44 47 08 9A 05 75 00 01 3D 05  --  0663F0
36 FF 2E 65 84 36 FF 2E 65 86 36 FF 2E 01 01 FE  --  066400
52 0C C4 83 00 5C 93 FD 9A 65 80 36 FF 2E 65 82  --  066410
00 5C ED 6E 9A 66 7C 36 FF 2E 66 7E 36 FF 2E 50  --  066420
9A 35 FF 0A 74 00 3D 83 66 80 3E C5 2E 0A C4 83  --  066430
55 8B 05 8B 66 7C 3E C5 2E 02 C4 83 00 44 56 66  --  066440
4E 36 FF 2E 50 F6 46 8D 16 FE 56 89 FC 46 89 02  --  066450
83 00 54 F6 E3 9A FC 76 FF 52 66 4C 36 FF 2E 66  --  066460
66 84 3E C5 2E E4 2A 05 8A 66 88 3E C5 2E 0C C4  --  066470
FF 2E 12 75 00 03 3D 05 8B 65 D0 3E C5 2E 05 89  --  066480
04 C4 83 00 4C 14 FA 9A 66 4C 36 FF 2E 66 4E 36  --  066490
66 90 3E C5 2E 1F 74 00 08 05 F7 66 8C 3E C5 2E  --  0664A0
2E 14 75 00 07 05 F7 66 8C 3E C5 2E 00 00 05 C7  --  0664B0
C7 66 90 3E C5 2E 12 EB 00 01 05 C7 66 94 3E C5  --  0664C0
```

454

```
F6 46 8D 16 00 00 05 C7 66 94 3E C5 2E 00 01 05 -- 0664D0
61 60 9A FC 76 FF FE 76 FF 50 F8 46 89 C0 2B 50 -- 0664E0
9A 66 7C 36 FF 2E 66 7E 36 FF 2E 0A C4 83 00 5C -- 0664F0
F6 76 FF 0B 74 00 F6 7E 83 04 C4 83 00 5C 94 D5 -- 066500
3E C5 2E 00 44 4D D5 9A 02 C4 83 00 44 56 66 9A -- 066510
5C 72 04 9A 00 14 BB 60 9A 47 74 00 3D 83 66 98 -- 066520
02 C4 83 00 14 F4 64 9A 35 FF 66 9C 3E C5 2E 00 -- 066530
2E 65 86 36 FF 2E 02 C4 83 00 54 7B 5F 9A 02 6A -- 066540
2E 66 A2 36 FF 2E 02 6A 50 00 03 05 65 84 06 8B -- 066550
FF 2E 16 EB 0A C4 83 00 64 14 40 9A 66 A0 36 FF -- 066560
64 15 E0 9A 50 00 03 05 65 84 06 8B 2E 65 86 36 -- 066570
21 75 00 03 3D 05 8B 65 D0 3E C5 2E 04 C4 83 00 -- 066580
3E C5 2E 00 6A 01 6A 01 6A 01 6A 50 F6 46 8D 16 -- 066590
C4 83 00 64 3D BA 9A 00 CA 68 05 6A 35 FF 66 9C -- 0665A0
00 64 13 07 9A 50 F6 46 8D 16 00 64 11 62 9A 12 -- 0665B0
83 11 74 00 03 3D 05 8B 65 D0 3E C5 2E 04 C4 83 -- 0665C0
02 C4 83 00 5C B8 02 9A 00 80 68 0B 74 00 F4 7E -- 0665D0
A6 36 FF 2E 66 A4 36 FF 2E 66 A6 36 FF 2E 57 56 -- 0665E0
5E 5F 00 5C FF 6A 9A 01 00 68 65 A4 36 FF 2E 65 -- 0665F0
05 89 66 A8 3E C5 2E 05 8B 65 BC 3E C5 2E 01 FE -- 066600
C8 57 56 CB 5E 5F C9 00 00 05 C7 66 98 3E C5 2E -- 066610
34 2F B0 9A 00 00 05 C7 65 8C 3E C5 2E 00 00 02 -- 066620
00 4C 18 DC 9A 05 74 00 3D 83 65 D8 3E C5 2E 00 -- 066630
2E 00 64 4A 0E 9A 00 54 C8 76 9A 00 54 C8 5F 9A -- 066640
FF 2E 65 8E 36 FF 2E 17 74 00 3D 83 66 AC 3E C5 -- 066650
08 C4 83 00 64 40 D0 9A 00 DA 68 02 6A 65 8C 36 -- 066660
6F 6A 03 6A 03 6A 65 8C 36 FF 2E 65 8E 36 FF 2E -- 066670

36 FF 2E 65 8E 36 FF 2E 0A C4 83 00 64 40 D0 9A -- 066680
0A C4 83 00 64 40 D0 9A 6F 6A 03 6A 3D 6A 65 8C -- 066690
6F 6A 03 6A 35 6A 65 8C 36 FF 2E 65 8E 36 FF 2E -- 0666A0
36 FF 2E 65 8E 36 FF 2E 0A C4 83 00 64 40 D0 9A -- 0666B0
0A C4 83 00 64 40 D0 9A 6F 6A 03 6A 16 6A 65 8C -- 0666C0
83 65 D8 3E C5 2E 18 74 00 3D 83 66 B0 3E C5 2E -- 0666D0
83 00 44 83 12 9A 00 6A 02 EB 01 6A 04 74 00 3D -- 0666E0
01 3D 05 8B 65 F0 3E C5 2E 00 4C 07 4F 9A 02 C4 -- 0666F0
FD EA 9A 65 8C 36 FF 2E 65 8E 36 FF 2E 3F 75 00 -- 066700
9A 05 75 00 3D 83 65 D8 3E C5 2E 04 C4 83 00 4C -- 066710
12 74 00 01 3D 05 8B 66 B4 3E C5 2E 00 4C F0 04 -- 066720
83 00 64 2A BB 9A 65 8C 36 FF 2E 65 8E 36 FF 2E -- 066730
8C 36 FF 2E 65 8E 36 FF 2E 00 44 57 40 9A 04 C4 -- 066740
FF 2E 65 82 36 FF 2E 04 C4 83 00 64 13 49 9A 65 -- 066750
66 34 3E C5 2E 04 C4 83 00 5C D3 65 9A 65 80 36 -- 066760
74 00 04 3D 05 8B 65 D0 3E C5 2E 2E 74 0A 3D 80 -- 066770
65 8C 36 FF 2E 65 8E 36 FF 2E 1D 75 00 01 3D 05 -- 066780
00 64 40 D0 9A 01 48 68 03 6A 50 FE 46 89 C0 2B -- 066790
E7 1A 9A 0C 74 00 3D 83 65 D8 3E C5 2E 0A C4 83 -- 0667A0
DA 9A 00 54 40 44 9A 0F EB 00 5C 78 6E 9A 00 14 -- 0667B0
00 3D 83 65 D8 3E C5 2E 00 5C 73 9D 9A 00 14 BC -- 0667C0
5C 90 FA 9A 65 80 36 FF 2E 65 82 36 FF 2E 17 75 -- 0667D0
3D 83 66 68 3E C5 2E 00 5C E7 28 9A 04 C4 83 00 -- 0667E0
C4 83 00 4C 06 B7 9A 57 66 6A 36 FF 2E 0E 74 00 -- 0667F0
36 FF 2E 22 7C 00 3D 83 65 DC 3E C5 2E 04 01 FE -- 066800
D0 9A 01 F6 68 03 6A 35 FF 65 8C 36 FF 2E 65 8E -- 066810
2E D4 EB 0D FF 65 DC 3E C5 2E 0A C4 83 00 64 40 -- 066820
FF 2E 00 14 F4 CD 9A 1B 75 00 3D 83 65 D8 3E C5 -- 066830
64 40 D0 9A 68 6A 02 6A 65 8C 36 FF 2E 65 8E 36 -- 066840
26 75 00 03 3D 05 8B 65 D0 3E C5 2E 08 C4 83 00 -- 066850
04 6A 04 6A 04 6A 65 8C 36 FF 2E 65 8E 36 FF 2E -- 066860
BA 9A 00 CA 68 05 6A 35 FF 66 9C 3E C5 2E 00 6A -- 066870
```

```
27 75 00 3D 83 65 D8 3E C5 2E 12 C4 83 00 64 3D -- 066880
FF 66 9C 3E C5 2E 65 8C 36 FF 2E 65 8E 36 FF 2E -- 066890
92 BF 9A 0A C4 83 00 64 3D BA 9A 01 6A 01 6A 35 -- 0668A0
2E 66 72 36 FF 2E 08 C2 68 00 5C 39 51 9A 00 5C -- 0668B0
CB 5E 5F C9 06 C4 83 00 64 48 1E 9A 66 70 36 FF -- 0668C0
02 C4 83 00 64 59 DC 9A 0A 76 FF EC 8B 55 57 56 -- 0668D0
3D 83 65 F4 3E C5 2E 00 00 05 C7 65 D8 3E C5 2E -- 0668E0
64 2A BB 9A 50 0A 46 8D 16 00 00 05 C7 16 74 00 -- 0668F0
00 64 56 DE 9A 00 6A 00 44 53 B5 9A 04 C4 83 00 -- 066900
F4 3E C5 2E EC 8B 55 57 56 CB 5E 5F C9 02 C4 83 -- 066910
FF 00 44 53 B5 9A 00 00 05 C7 09 74 00 3D 83 65 -- 066920
57 56 CB 5E 5F C9 02 C4 83 00 64 5C A6 9A 0A 76 -- 066930
05 8B 65 F0 3E C5 2E 00 44 65 63 9A 00 00 02 C8 -- 066940
2E D8 8B E0 D1 2C 77 00 07 3D 00 03 2D FE 46 89 -- 066950
57 11 57 1D 57 1D 57 1D 57 1D 57 0A 56 FA A7 FF -- 066960
00 1C E0 B6 9A 0C EB 00 2C 69 21 9A 57 18 57 1D -- 066970
EC 8B 55 57 56 CB 5E 5F C9 00 34 B0 C3 9A 05 EB -- 066980
75 00 04 3D 05 8B 65 F0 3E C5 2E 00 44 57 40 9A -- 066990
2E EC 8B 55 57 56 CB 5E 5F C9 00 34 81 DB 9A 05 -- 0669A0
66 9C 3E C5 2E 02 6A 65 8C 36 FF 2E 65 8E 36 FF -- 0669B0
2E 0C C4 83 00 64 3D BA 9A 01 92 68 02 6A 35 FF -- 0669C0
66 9C 3E C5 2E 03 6A 65 8C 36 FF 2E 65 8E 36 FF -- 0669D0
2E 0C C4 83 00 64 3D BA 9A 01 92 68 02 6A 35 FF -- 0669E0
66 9C 3E C5 2E 04 6A 65 8C 36 FF 2E 65 8E 36 FF -- 0669F0
C4 83 00 64 3D BA 9A 01 92 68 02 6A 35 FF 01 FE -- 066A00
3E C5 2E 05 6A 65 8C 36 FF 2E 65 8E 36 FF 2E 0C -- 066A10

C4 83 00 64 3D BA 9A 01 92 68 02 6A 35 FF 66 9C -- 066A20
65 8C 3E C5 2E 00 00 08 C8 57 56 CB 5E 5F C9 0C -- 066A30
20 75 00 05 3D 05 8B 65 F0 3E C5 2E 00 00 05 C7 -- 066A40
83 66 BC 3E C5 2E 16 74 00 3D 83 66 B8 3E C5 2E -- 066A50
02 3A E9 03 75 C0 0B 00 14 58 36 9A 0C 74 00 3D -- 066A60
C7 02 C4 83 00 4C 17 0B 9A 35 FF 65 F0 3E C5 2E -- 066A70
6A 00 6A 00 6A 35 FF 66 C0 3E C5 2E 00 01 F8 46 -- 066A80
01 B8 01 6A 01 6A 56 D4 68 0E F8 76 FF 00 6A 00 -- 066A90
54 C9 5C 9A 50 FC 46 89 00 01 B8 50 FE 46 89 00 -- 066AA0
3E C5 2E 00 00 05 C7 65 F8 3E C5 2E 18 C4 83 00 -- 066AB0
C6 36 FF 2E 00 5C 04 EE 9A 05 74 00 3D 83 65 FC -- 066AC0
65 B8 36 FF 2E 65 BA 36 FF 2E 66 C4 36 FF 2E 66 -- 066AD0
00 3D 83 65 FC 3E C5 2E 08 C4 83 00 4C 16 72 9A -- 066AE0
74 00 04 3D 05 8B 65 F0 3E C5 2E 01 84 E9 03 74 -- 066AF0
65 8C 36 FF 2E 65 8E 36 FF 2E 18 75 00 03 3D 05 -- 066B00
C5 2E 0A C4 83 00 64 40 D0 9A 6F 6A 03 6A 03 6A -- 066B10
EB 00 44 5D 77 9A 07 75 00 03 3D 05 8B 65 D0 3E -- 066B20
66 B0 3E C5 2E 0A 74 00 3D 83 66 08 3E C5 2E 44 -- 066B30
6A 65 8C 36 FF 2E 65 8E 36 FF 2E 30 75 00 3D 83 -- 066B40
36 FF 2E 0A C4 83 00 64 40 D0 9A 6F 6A 03 6A 16 -- 066B50
40 D0 9A 6F 6A 03 6A 13 6A 65 8C 36 FF 2E 65 8E -- 066B60
9A 05 75 00 3D 83 66 08 3E C5 2E 0A C4 83 00 64 -- 066B70
C5 2E 76 74 00 3D 83 65 88 3E C5 2E 00 44 57 40 -- 066B80
9A 65 75 00 0A 3D 0E 75 00 0A 3D 05 8B 65 F0 3E -- 066B90
00 3D 83 66 18 3E C5 2E 5C 74 C0 0B 00 34 B1 2D -- 066BA0
00 6A 16 75 00 03 3D 05 8B 65 D0 3E C5 2E 0C 75 -- 066BB0
36 FF 2E 66 CA 36 FF 2E 50 FA 46 89 C0 2B 00 6A -- 066BC0
FF 2E 50 FA 46 89 C0 2B 00 6A 00 6A 14 EB 66 C8 -- 066BD0
36 FF 2E 65 CE 36 FF 2E 66 CC 36 FF 2E 66 CE 36 -- 066BE0
54 CB 7F 9A 65 C8 36 FF 2E 65 CA 36 FF 2E 65 CC -- 066BF0
2D 74 00 3D 83 65 88 3E C5 2E 12 C4 83 00 01 FE -- 066C00
6A 36 FF 2E 0E 75 00 01 3D 05 8B 66 68 3E C5 2E -- 066C10
2E 65 8E 36 FF 2E 04 C4 83 00 4C 06 B7 9A 57 66 -- 066C20
```

```
36 FF 2E 11 EB 01 F6 68 03 6A 01 6A 65 8C 36 FF -- 066C30
D0 9A 01 F7 68 03 6A 01 6A 65 8C 36 FF 2E 65 8E -- 066C40
2E 65 BA 36 FF 2E 00 6A 00 6A 0A C4 83 00 64 40 -- 066C50
C1 9A 65 80 36 FF 2E 65 82 36 FF 2E 65 B8 36 FF -- 066C60
00 54 A2 55 9A 00 54 CF 43 9A 0C C4 83 00 54 CD -- 066C70
2E 02 C4 83 00 4C 17 56 9A 35 FF 65 F0 3E C5 2E -- 066C80
65 F0 3E C5 2E 11 75 00 03 3D 05 8B 65 D0 3E C5 -- 066C90
CB 5E 5F C9 00 54 C8 1C 9A 05 75 00 08 3D 05 8B -- 066CA0
9A 00 00 06 C8 57 56 CB 5E 5F C9 EC 8B 55 57 56 -- 066CB0
2E 17 75 0A 46 0B 0C 46 8B FA 46 89 00 34 D9 7E -- 066CC0
00 6A 00 6A 00 6A 00 6A 00 6A 35 FF 66 C0 3E C5 -- 066CD0
6A 00 6A 35 FF 66 C0 3E C5 2E 17 EB 5A 42 68 0E -- 066CE0
6A 01 6A 0A 76 FF 0C 76 FF 00 6A 00 6A 00 6A 00 -- 066CF0
5C 9A 50 FE 46 89 C0 2B 50 FC 46 89 00 01 B8 00 -- 066D00
66 C4 36 FF 2E 66 C6 36 FF 2E 18 C4 83 00 54 C9 -- 066D10
83 00 4C 16 72 9A 65 B8 36 FF 2E 65 BA 36 FF 2E -- 066D20
65 B8 36 FF 2E 65 BA 36 FF 2E 00 6A 00 6A 08 C4 -- 066D30
83 00 54 CD C1 9A 65 80 36 FF 2E 65 82 36 FF 2E -- 066D40
C8 1C 9A 0A 74 00 FA 7E 83 00 54 CF 43 9A 0C C4 -- 066D50
01 22 C8 57 56 CB 5E 5F C9 00 34 DA 22 9A 00 54 -- 066D60
02 FE E2 86 C6 01 FE E1 86 C6 00 FE E0 86 C6 00 -- 066D70
C6 05 FE E5 86 C6 04 FE E4 86 C6 03 FE E3 86 C6 -- 066D80
86 C6 08 FE E8 86 C6 07 FE E7 86 C6 06 FE E6 86 -- 066D90
EC 86 C6 0B FE EB 86 C6 0A FE EA 86 C6 09 FE E9 -- 066DA0
FE EF 86 C6 0E FE EE 86 C6 0D FE ED 86 C6 0C FE -- 066DB0

89 C0 2B 50 F0 46 89 00 10 B8 50 FE 46 8D 16 0F -- 066DC0
F6 46 89 00 F0 B8 50 F4 46 89 00 10 B8 50 F2 46 -- 066DD0
C0 2B 50 FA 46 89 00 04 B8 50 F8 46 89 C0 2B 50 -- 066DE0
C4 83 00 64 40 D0 9A 01 4F 68 09 6A 50 FC 46 89 -- 066DF0
0D 05 8B F8 46 89 05 8B 65 A8 3E C5 2E 16 01 FE -- 066E00
F0 46 89 00 10 B8 50 FE 46 8D 16 F6 46 89 00 F0 -- 066E10
76 FF 50 F4 46 89 00 10 B8 50 F2 46 89 C0 2B 50 -- 066E20
FC 46 89 C0 2B 50 FA 46 89 00 04 B8 F8 76 FF F6 -- 066E30
C5 2E 16 C4 83 00 64 40 D0 9A 01 4F 68 09 6A 50 -- 066E40
F6 46 89 00 F0 0D 05 8B F8 46 89 05 8B 65 AC 3E -- 066E50
F2 46 89 C0 2B 50 F0 46 89 C0 2B 50 FE 46 8D 16 -- 066E60
04 B8 F8 76 FF F6 76 FF 50 F4 46 89 00 10 B8 50 -- 066E70
01 4F 68 09 6A 50 FC 46 89 C0 2B 50 FA 46 89 00 -- 066E80
00 04 B8 50 FE 46 8D 16 16 C4 83 00 64 40 D0 9A -- 066E90
46 89 00 10 B8 50 F2 46 89 00 C1 B8 50 F0 46 89 -- 066EA0
2B 50 FA 46 89 00 01 B8 F8 76 FF F6 76 FF 50 F4 -- 066EB0
83 00 64 40 D0 9A 01 4F 68 09 6A 50 FC 46 89 C0 -- 066EC0
16 7D 01 00 FE DE BE 81 00 00 FE DE 86 C7 16 C4 -- 066ED0
FE F0 85 88 FE DE 86 8B FE DE BE 03 1F 16 FD 8B -- 066EE0
FE E0 86 8D 16 50 FE 46 8D 16 E2 EB FE DE 86 FF -- 066EF0
00 6A 00 6A 01 00 68 10 6A 50 FE F0 86 8D 16 50 -- 066F00
FE 7E 83 18 C4 83 00 64 40 D0 9A 01 43 68 0A 6A -- 066F10
86 C7 02 C4 83 00 64 59 DC 9A FE 76 FF 0B 74 00 -- 066F20
BE 83 00 A5 E9 03 75 02 FE DE BE 83 00 00 FE DE -- 066F30
A8 3E C5 2E 05 EB 65 AC 3E C5 2E 07 75 00 FE DE -- 066F40
-46 89 00 F4 0D 05 8B F8 46 89 00 04 0D 05 8B 65 -- 066F50
F0 46 89 C0 2B 65 8C 36 FF 2E 65 8E 36 FF 2E F6 -- 066F60
76 FF 50 F4 46 89 00 10 B8 50 F2 46 89 C0 2B 50 -- 066F70
FC 46 89 C0 2B 50 FA 46 89 00 04 B8 F8 76 FF F6 -- 066F80
FF 2E 16 C4 83 00 64 40 D0 9A 01 4F 68 09 6A 50 -- 066F90
FF B8 50 F0 46 89 C0 2B 65 8C 36 FF 2E 65 8E 36 -- 066FA0
FF F6 76 FF 50 F4 46 89 00 10 B8 50 F2 46 89 00 -- 066FB0
6A 50 FC 46 89 C0 2B 50 FA 46 89 00 03 B8 F8 76 -- 066FC0
FE DE 86 FF 16 C4 83 00 64 40 D0 9A 01 4F 68 09 -- 066FD0
```

457

```
FE 46 C7 00 00 18 C8 57 56 CB 5E 5F C9 FF 51 E9 -- 066FE0
46 C6 02 EA 46 C6 01 E9 46 C6 00 E8 46 C6 00 00 -- 066FF0
06 EE 46 C6 05 ED 46 C6 04 EC 46 C6 03 EB 01 FE -- 067000
0A F2 46 C6 09 F1 46 C6 08 F0 46 C6 07 EF 46 C6 -- 067010
0E F6 46 C6 0D F5 46 C6 0C F4 46 C6 0B F3 46 C6 -- 067020
50 FA 46 89 00 A0 B8 50 FE 46 8D 16 0F F7 46 C6 -- 067030
83 08 C4 83 00 4C 00 2B 9A 50 FC 46 89 00 A0 B8 -- 067040
02 C4 83 00 64 59 DC 9A FE 76 FF 0B 74 00 FE 7E -- 067050
8D 16 50 E8 46 8D 16 50 FE 46 8D 16 A0 F8 46 C6 -- 067060
01 43 68 0A 6A 00 6A 00 6A 01 6A 10 6A 50 F8 46 -- 067070
76 FF 0B 74 00 FE 7E 83 18 C4 83 00 64 40 D0 9A -- 067080
50 FC 46 89 00 A0 B8 02 C4 83 00 64 59 DC 9A FE -- 067090
02 C8 57 56 CB 5E 5F C9 02 C4 83 00 5C 01 32 9A -- 0670A0
D0 3E C5 2E 6F 74 00 3D 83 65 88 3E C5 2E 00 00 -- 0670B0
46 C7 00 00 05 C7 66 D4 3E C5 2E 00 00 05 C7 66 -- 0670C0
8B 7A 7F 05 3B FE 46 8B 65 BC 3E C5 2E 00 01 FE -- 0670D0
05 8B 65 A6 1E 8E 2E 65 A4 3E 03 2E E7 D1 FE 7E -- 0670E0
04 FF 26 3C 8B 26 66 D0 36 C4 2E 17 75 00 01 3D -- 0670F0
D4 36 C4 2E 15 EB 66 DA 1E 8E 2E 66 D8 3E 03 2E -- 067100
DE 1E 8E 2E 66 DC 3E 03 2E 04 FF 26 3C 8B 26 66 -- 067110
65 AC 3E C5 2E A8 EB FE 46 FF 05 88 FE 46 8B 66 -- 067120
05 8B 65 A8 3E C5 2E 05 88 66 D8 3E C5 2E 05 8B -- 067130
00 01 05 C7 66 D0 3E C5 2E 05 88 66 DC 3E C5 2E -- 067140
55 57 56 CB 5E 5F C9 00 01 05 C7 66 D4 3E C5 2E -- 067150

66 A8 3E C5 2E 00 01 05 C7 66 04 3E C5 2E EC 8B -- 067160
65 A6 36 FF 2E 57 56 05 89 65 BC 3E C5 2E 05 8B -- 067170
68 66 A4 36 FF 2E 66 A6 36 FF 2E 65 A4 36 FF 2E -- 067180
5F C9 00 44 5E 3A 9A 5E 5F 00 5C FF 6A 9A 01 00 -- 067190
46 C7 29 74 00 0A 7E 83 00 00 02 C8 57 56 CB 5E -- 0671A0
8B 18 7F 05 3B FE 46 8B 65 BC 3E C5 2E 00 01 FE -- 0671B0
35 81 65 A6 1E 8E 2E 65 A4 3E 03 2E E7 D1 FE 7E -- 0671C0
D8 3E C5 2E 00 44 5E 3A 9A DC EB FE 46 FF 00 03 -- 0671D0
DC 3E C5 2E 05 89 65 AC 3E C5 2E E4 2A 05 8A 66 -- 0671E0
BC 3E C5 2E 05 89 65 A8 3E C5 2E E4 2A 05 8A 66 -- 0671F0
FF 2E 57 56 05 89 66 A8 3E C5 2E 05 8B 65 01 FE -- 067200
36 FF 2E 65 A6 36 FF 2E 66 A4 36 FF 2E 66 A6 36 -- 067210
CB 5E 5F C9 5E 5F 00 5C FF 6A 9A 01 00 68 65 A4 -- 067220
9A 05 74 00 3D 83 65 FC 3E C5 2E EC 8B 55 57 56 -- 067230
65 63 9A EC 8B 55 57 56 CB 5E 5F C9 00 54 C8 1C -- 067240
56 CB 5E 5F C9 EC 8B 55 57 56 CB 5E 5F C9 00 44 -- 067250
80 66 E0 3E C5 2E 00 00 FE 46 C7 00 00 08 C8 57 -- 067260
C8 1C 9A 00 01 05 C7 66 14 3E C5 2E 0E 75 03 3D -- 067270
6A 00 6A 00 6A 00 6A 35 FF 66 C0 3E C5 2E 00 54 -- 067280
FA 46 89 C0 2B 01 6A 01 6A 5F D4 68 0E 00 6A 00 -- 067290
18 C4 83 00 54 C9 5C 9A 50 FC 46 89 00 01 B8 50 -- 0672A0
00 6A 00 6A 16 75 00 03 3D 05 8B 65 D0 3E C5 2E -- 0672B0
66 C8 36 FF 2E 66 CA 36 FF 2E 50 F8 46 89 C0 2B -- 0672C0
CE 36 FF 2E 50 F8 46 89 C0 2B 00 6A 00 6A 14 EB -- 0672D0
65 CC 36 FF 2E 65 CE 36 FF 2E 66 CC 36 FF 2E 66 -- 0672E0
83 00 54 CB 7F 9A 65 C8 36 FF 2E 65 CA 36 FF 2E -- 0672F0
FF 2E 0E 75 00 01 3D 05 8B 66 68 3E C5 2E 12 C4 -- 067300
FE 46 8D 16 04 C4 83 00 4C 06 B7 9A 57 66 6A 36 -- 067310
0A C4 83 00 64 40 D0 9A 01 F6 68 03 6A 01 6A 50 -- 067320
9A 0E 75 03 3D 80 66 E0 3E C5 2E 00 54 CF 43 9A -- 067330
5E 5F C9 00 00 05 C7 66 14 3E C5 2E 00 54 C8 1C -- 067340
88 3E C5 2E 00 00 EE 46 C7 00 00 12 C8 57 56 CB -- 067350
00 03 3D 05 8B 65 F0 3E C5 2E 1E 75 00 3D 83 65 -- 067360
74 00 05 3D 08 74 00 08 3D 0D 74 00 07 3D 12 74 -- 067370
03 74 00 01 3D 05 8B 65 E4 3E C5 2E 02 01 E9 03 -- 067380
```

458

```
03 3D 05 8B 65 DO 3E C5 2E 00 00 05 C7 00 FB E9 -- 067390
OD 05 8B FA 46 89 05 8B 65 AC 3E C5 2E 4E 75 00 -- 0673A0
F2 46 89 00 10 B8 50 F0 46 8D 16 F8 46 89 00 F0 -- 0673B0
76 FF 50 F6 46 89 00 10 B8 50 F4 46 89 CO 2B 50 -- 0673C0
FE 46 89 CO 2B 50 FC 46 89 00 04 B8 FA 76 FF F8 -- 0673D0
83 E9 16 C4 83 00 64 40 DO 9A 01 4F 68 09 6A 50 -- 0673E0
46 8D 16 6F 75 00 01 3D 05 8B 66 04 3E C5 2E 01 -- 0673F0
FF 2E 65 D4 36 FF 2E 65 D6 36 FF 2E 50 EE 01 FE -- 067400
FF 66 DO 3E C5 2E 10 6A 66 D8 36 FF 2E 66 DA 36 -- 067410
68 OA 6A 00 6A 50 E4 2A 05 8A 66 E4 3E C5 2E 35 -- 067420
83 65 E8 3E C5 2E 18 C4 83 00 64 40 DO 9A 01 43 -- 067430
D6 36 FF 2E 50 EE 46 8D 16 01 2F E9 03 75 00 3D -- 067440
66 EC 36 FF 2E 66 EE 36 FF 2E 65 D4 36 FF 2E 65 -- 067450
8D 16 00 F9 E9 04 6A 35 FF 66 E8 3E C5 2E 10 6A -- 067460
36 FF 2E 65 D4 36 FF 2E 65 D6 36 FF 2E 50 EE 46 -- 067470
8F EB 66 D4 3E C5 2E 10 6A 66 DC 36 FF 2E 66 DE -- 067480
05 8B 65 DO 3E C5 2E 00 01 05 C7 65 E4 3E C5 2E -- 067490
8B FA 46 89 05 8B 65 AC 3E C5 2E 70 75 00 03 3D -- 0674A0
46 89 CO 2B 50 FO 46 8D 16 F8 46 89 00 FO OD 05 -- 0674B0
FF 50 F6 46 89 00 10 B8 50 F4 46 89 CO 2B 50 F2 -- 0674C0
46 89 CO 2B 50 FC 46 89 00 04 B8 FA 76 FF F8 76 -- 0674D0
16 16 C4 83 00 64 40 DO 9A 01 4F 68 09 6A 50 FE -- 0674E0
46 89 00 C1 B8 50 F2 46 89 00 04 B8 50 FO 46 8D -- 0674F0

B8 FA 76 FF F8 76 FF 50 F6 46 89 00 10 B8 50 F4 -- 067500
75 00 01 3D 05 8B 66 04 3E C5 2E FE C4 E9 00 01 -- 067510
65 D4 36 FF 2E 65 D6 36 FF 2E 50 EE 46 8D 16 22 -- 067520
DO 3E C5 2E 10 6A 66 D8 36 FF 2E 66 DA 36 FF 2E -- 067530
36 FF 2E 65 D6 36 FF 2E 50 EE 46 8D 16 20 EB 66 -- 067540
C5 2E 10 6A 66 DC 36 FF 2E 66 DE 36 FF 2E 65 D4 -- 067550
DO 9A 01 43 68 OA 6A 00 6A 00 6A 35 FF 66 D4 3E -- 067560
9A EE 76 FF OB 74 00 EE 7E 83 18 C4 83 00 64 40 -- 067570
01 02 C8 57 56 CB 5E 5F C9 02 C4 83 00 64 59 DC -- 067580
00 03 3D 05 8B 65 DO 3E C5 2E 00 00 FE 46 C7 00 -- 067590
2E 1E 75 00 3D 83 65 88 3E C5 2E 00 E5 E9 03 75 -- 0675A0
OD 74 00 07 3D 12 74 00 03 3D 05 8B 65 FO 3E C5 -- 0675B0
3E C5 2E 00 BD E9 03 74 00 05 3D 08 74 00 08 3D -- 0675C0
C5 2E 00 44 98 EF 9A 05 75 00 01 3D 05 8B 65 FO -- 0675D0
FE 86 8D 16 00 01 05 C7 36 75 00 3D 83 66 OC 3E -- 0675E0
FF 2E 66 DE 36 FF 2E 35 FF 66 D4 3E C5 2E 50 FE -- 0675F0
DA 36 FF 2E 35 FF 66 DO 3E C5 2E 66 DC 36 01 FE -- 067600
48 EB 10 C4 83 00 44 64 18 9A 66 D8 36 FF 2E 66 -- 067610
25 6A 50 FE 46 8D 16 00 00 05 C7 66 OC 3E C5 2E -- 067620
FO 3E C5 2E OA C4 83 00 64 40 DO 9A 6F 6A 03 6A -- 067630
65 FO 3E C5 2E 00 14 DB 64 9A 05 74 00 3D 83 66 -- 067640
40 3D 05 8B 65 BC 3E C5 2E 11 75 00 01 3D 05 8B -- 067650
76 FF OD 74 00 FE 7E 83 00 44 5F EB 9A 05 7C 00 -- 067660
65 FO 3E C5 2E 11 EB 02 C4 83 00 64 59 DC 9A FE -- 067670
CB 5E 5F C9 00 44 99 4A 9A 05 75 00 01 3D 05 8B -- 067680
F2 46 89 CO 2B 50 EA 46 8D 16 00 00 16 C8 57 56 -- 067690
F8 B8 50 F6 46 89 00 01 B8 50 F4 46 89 CO 2B 50 -- 0676A0
89 00 04 B8 50 FA 46 89 00 80 B8 50 F8 46 89 00 -- 0676B0
DO 9A 01 4F 68 09 6A 50 FE 46 89 CO 2B 50 FC 46 -- 0676C0
F2 46 89 CO 2B 50 EA 46 8D 16 16 C4 83 00 64 40 -- 0676D0
76 FF F8 76 FF F6 76 FF 50 F4 46 89 00 FF B8 50 -- 0676E0
09 6A 50 FE 46 89 CO 2B 50 FC 46 89 00 01 B8 FA -- 0676F0
56 8B OA 46 8B 16 C4 83 00 64 40 DO 9A 01 4F 68 -- 067700
6A 16 76 FF 18 76 FF 57 56 FO 56 89 EE 46 89 OC -- 067710
00 00 EC 46 C7 5E 5F 00 8C 00 02 9A 01 00 68 00 -- 067720
8B E4 2A 05 8A EE 7E C5 1E 7D OE 46 3B EC 46 8B -- 067730
```

```
46 FF 04 88 26 E4 2A 05 8A 18 46 8E 16 76 03 F0 -- 067740
89 EE 46 89 12 56 8B 10 46 8B DA EB EC 46 FF EE -- 067750
C5 1E 7D 14 46 3B EC 46 8B 00 00 EC 46 C7 F0 56 -- 067760
05 8A 18 46 8E 16 76 03 F0 8B E4 2A 05 8A EE 7E -- 067770
46 8D 16 DA EB EC 46 FF EE 46 FF 04 88 26 E4 2A -- 067780
FF 18 76 FF 16 6A 7F 6A 00 80 68 00 80 68 50 EA -- 067790
20 3E C5 2E 50 E0 D1 05 8B 66 24 3E C5 2E 16 76 -- 0677A0
50 E0 D1 05 8B 66 2C 3E C5 2E 50 E0 D1 05 8B 66 -- 0677B0
9A 03 F2 68 0C 6A 50 E0 D1 05 8B 66 28 3E C5 2E -- 0677C0
EC 8B 55 57 56 CB 5E 5F C9 1C C4 83 00 64 40 D0 -- 0677D0
15 9A 00 00 05 C7 09 74 00 3D 83 66 0C 3E C5 2E -- 0677E0
00 3C 86 F6 00 3C 86 A2 00 CB 5E 5F C9 00 44 63 -- 0677F0
91 14 00 3C 90 D8 00 3C B6 82 00 3C 90 C2 01 FE -- 067800
AF 10 00 3C B6 6D 00 3C B6 6F 00 3C B6 2A 00 3C -- 067810
87 6E 00 3C 90 C0 00 3C 91 0E 00 3C 91 10 00 3C -- 067820
90 C6 00 3C 90 ED 00 3C B3 10 00 3C 90 36 00 3C -- 067830
B6 8C 00 3C B3 24 00 6C 28 74 00 3C AE 60 00 3C -- 067840
91 12 00 3C B6 84 00 3C 86 9C 00 3C AE 58 00 3C -- 067850
B6 86 00 3C 86 9A 00 3C 91 16 00 3C B3 26 00 3C -- 067860
77 8E 00 3C B3 20 00 3C B3 1A 00 3C 92 4E 00 3C -- 067870
B3 18 00 24 77 96 00 3C B3 1C 00 24 31 46 00 24 -- 067880
AE D8 00 3C AE D6 00 6C 27 C4 00 3C AF 0E 00 3C -- 067890

AE EC 00 3C AE EA 00 3C AE DC 00 3C AE DA 00 3C -- 0678A0
91 22 00 3C B3 22 00 3C AF 0D 00 3C AE 5C 00 3C -- 0678B0
90 9C 00 3C 87 DA 00 3C 91 4C 00 3C B3 28 00 3C -- 0678C0
90 7A 00 3C 90 7E 00 3C 90 98 00 3C 87 DE 00 3C -- 0678D0
8F 9C 00 3C 87 74 00 3C 91 18 00 3C 86 9E 00 3C -- 0678E0
91 4A 00 3C B6 7E 00 3C B6 70 00 3C 91 1A 00 3C -- 0678F0
92 50 00 3C 92 4C 00 3C 91 4E 00 3C 91 4D 00 3C -- 067900
B1 10 00 3C B6 88 00 3C F5 A4 00 3C AE 5E 00 3C -- 067910
86 A0 00 3C AE 54 00 6C 31 50 00 3C B3 12 00 3C -- 067920
AE C6 00 3C AE 5A 00 3C 86 78 00 6C 31 52 00 3C -- 067930
B3 16 00 3C B3 14 00 6C 29 14 00 3C 86 68 00 3C -- 067940
92 54 00 3C 90 71 00 3C B4 2A 00 3C B3 2A 00 3C -- 067950
57 56 00 24 F4 7A 00 3C 9C 4A 00 3C 9D 4A 00 3C -- 067960
CB 5E 5F C9 00 00 05 C7 85 EA 3E C5 2E EC 8B 55 -- 067970
00 05 3D 48 05 8B 85 EE 3E C5 2E EC 8B 55 57 56 -- 067980
4F 67 39 67 2D 67 21 A7 FF 2E D8 8B E0 D1 37 77 -- 067990
4C 1A E1 9A 00 54 C8 1C 9A 67 45 67 4F 67 4F 67 -- 0679A0
9A 0A EB 00 2C B1 F4 9A 00 54 C8 1C 9A 16 EB 00 -- 0679B0
55 57 56 CB 5E 5F C9 00 14 B2 C5 9A 00 54 C8 1C -- 0679C0
D1 41 77 00 05 3D 48 05 8B 85 EE 3E C5 2E EC 8B -- 0679D0
67 A6 67 A6 67 86 67 7A 67 6E A7 FF 2E D8 8B E0 -- 0679E0
20 EB 00 4C 1B 57 9A 00 54 C8 1C 9A 67 9C 67 A6 -- 0679F0
54 C8 1C 9A 16 75 00 3D 83 85 F2 3E C5 2E 01 FE -- 067A00
7D C4 9A 00 54 C8 1C 9A 0A EB 00 2C B2 0E 9A 00 -- 067A10
F0 46 8D 16 00 00 10 C8 57 56 CB 5E 5F C9 00 14 -- 067A20
16 0A 76 FF 0C 76 FF 04 C4 83 00 34 EE 9B 9A 50 -- 067A30
1A 74 C0 0B 08 C4 83 00 4C 0E F6 9A 50 F0 46 8D -- 067A40
0E 76 FF 10 76 FF 85 F6 36 FF 2E 85 F8 36 FF 2E -- 067A50
CB 5E 5F C9 C0 2B 02 EB 08 C4 83 00 4C 0D 79 9A -- 067A60
00 01 E6 46 C7 00 00 E8 46 C7 00 00 32 C8 57 56 -- 067A70
5E DD 9B 85 FA 26 DC 2E 9B 04 45 D9 9B 0E 7E C5 -- 067A80
5C ED 94 9A DE 5E DC 9B 04 45 D9 9B 0A 7E C5 DE -- 067A90
85 FA 26 DC 2E 9B 0C 45 D9 9B 0E 7E C5 26 76 00 -- 067AA0
9A D6 5E DC 9B 0C 45 D9 9B 0A 7E C5 D6 5E DD 9B -- 067AB0
9B 0E 7E C5 0A 76 C4 02 80 E9 03 76 00 5C ED 94 -- 067AC0
94 9A 85 FA 1E DC 2E 9B 04 64 D8 26 9B 04 45 D9 -- 067AD0
C4 CE 5E DD 9B E8 D9 9B 01 E4 E9 03 77 00 5C ED -- 067AE0
```

```
46 DC 9B 24 D8 26 9B 04 45 D9 9B 12 7E C5 12 76 -- 067AF0
C4 DE 5E DD 9B 86 02 06 DF 2E 9B D6 5E DD 9B CE -- 067B00
4E DC 9B 24 D8 26 9B 04 45 D9 9B 0E 7E C5 0E 76 -- 067B10
04 45 D9 9B 0A 7E C5 EC 5E D9 9B D6 76 DC 9B DE -- 067B20
F8 5E D9 9B 08 45 D9 9B F0 5E D9 9B EC 46 D8 9B -- 067B30
9B 0C 45 D9 9B F4 5E D9 9B 04 45 D9 9B 0E 7E C5 -- 067B40
51 9A 50 F0 46 8D 16 1A 76 FF 1C 76 FF FC 5E D9 -- 067B50
FF 14 76 FF 0E 76 FF 10 76 FF 08 C4 83 00 34 E5 -- 067B60
04 36 FF 2E 86 06 36 FF 2E 50 F0 46 8D 16 12 76 -- 067B70
FF 2E 86 06 36 FF 2E 10 C4 83 00 34 DE 5F 9A 86 -- 067B80
08 63 9A 86 04 36 FF 2E 86 06 36 FF 2E 86 04 36 -- 067B90
2E 86 06 36 FF 2E 50 E8 46 8D 16 08 C4 83 00 4C -- 067BA0
C0 2B 86 04 36 FF 2E 86 06 36 FF 2E 86 04 36 FF -- 067BB0
EA 3E C5 2E 0E C4 83 00 4C 2A 67 9A 50 EA 46 89 -- 067BC0
9B 04 45 D9 9B 0E 7E C5 1A 76 C4 00 01 05 C7 85 -- 067BD0
C5 0D 73 00 5C ED 94 9A 04 5C D8 26 9B EC 46 D8 -- 067BE0
9B 1A 7E C5 07 EB EC 46 D8 9B 04 45 D9 9B 0E 7E -- 067BF0
9B 0E 7E C5 1A 76 C4 F4 5E D9 9B 04 45 D9 01 FE -- 067C00
5C ED 94 9A 0C 5C D8 26 9B EC 46 D8 9B 0C 45 D9 -- 067C10
07 EB EC 46 D8 9B 0C 45 D9 9B 0E 7E C5 0D 73 00 -- 067C20
1C 76 FF 00 6A FC 5E D9 9B 0C 45 D9 9B 1A 7E C5 -- 067C30

22 9A 16 76 FF 18 76 FF 50 F0 46 8D 16 1A 76 FF -- 067C40
16 76 FF 18 76 FF 00 6A 00 6A 0E C4 83 00 34 E2 -- 067C50
D9 9B 16 74 00 E6 7E 83 08 C4 83 00 4C 11 96 9A -- 067C60
D9 9B F0 6E D8 9B EC 46 D9 9B F4 5E D9 9B F0 46 -- 067C70
EC 46 D9 9B FC 5E D9 9B F8 46 D9 9B 14 EB F0 5E -- 067C80
1A 76 FF 1C 76 FF 00 6A F8 5E D9 9B F8 6E D8 9B -- 067C90
00 34 E2 22 9A 16 76 FF 18 76 FF 50 F0 46 8D 16 -- 067CA0
76 FF 00 6A 16 6A 00 6A 50 E8 46 8D 16 0E C4 83 -- 067CB0
76 C4 7D EB 0E C4 83 00 4C 10 41 9A 16 76 FF 18 -- 067CC0
DC 2E 9B 0C 64 D8 26 9B 0C 45 D9 9B 0E 7E C5 0A -- 067CD0
5E DD 9B E8 D9 9B 61 76 00 5C ED 94 9A 85 FA 1E -- 067CE0
08 64 D8 26 9B 0C 45 D9 9B 12 7E C5 12 76 C4 CE -- 067CF0
DD 9B 86 02 06 DF 2E 9B D6 5E DD 9B CE 46 DC 9B -- 067D00
64 D8 26 9B 0C 45 D9 9B 0E 7E C5 0E 76 C4 DE 5E -- 067D10
0A 7E C5 EC 5E D9 9B D6 76 DC 9B DE 4E DC 9B 08 -- 067D20
9B EC 46 D8 9B 0C 45 D9 9B F0 5E D9 9B 05 D9 9B -- 067D30
CB 5E 5F C9 9B FD F7 E9 00 00 E6 46 C7 F8 5E D9 -- 067D40
DD 9B EE D9 9B 00 00 E6 46 C7 00 00 2A C8 57 56 -- 067D50
64 D8 26 9B 04 45 D9 9B 0A 7E C5 0E 76 C4 DE 5E -- 067D60
C5 0E 76 C4 11 76 00 5C ED 94 9A DE 5E DC 9B 04 -- 067D70
0E 76 C4 12 EB 04 64 D8 26 9B 04 45 D9 9B 0A 7E -- 067D80
9B E0 D9 9B 04 64 D8 26 9B 04 45 D9 9B 0A 7E C5 -- 067D90
C4 00 DB E9 03 77 00 5C ED 94 9A 85 FA 1E DC 2E -- 067DA0
5E DD 9B 24 D8 26 9B 04 45 D9 9B 12 7E C5 12 76 -- 067DB0
7E C5 0E 76 C4 DE 5E DD 9B 86 02 06 DF 2E 9B D6 -- 067DC0
76 DC 9B DE 4E DC 9B 24 D8 26 9B 04 45 D9 9B 0E -- 067DD0
5E D9 9B EC 66 D8 9B 04 45 D9 9B EC 5E D9 9B D6 -- 067DE0
04 45 D9 9B 0A 7E C5 F8 5E D9 9B 08 45 D9 9B F0 -- 067DF0
00 6A FC 5E D9 9B 0C 45 D9 9B F4 5E D9 9B 01 FE -- 067E00
76 FF 18 76 FF 50 F0 46 8D 16 1A 76 FF 1C 76 FF -- 067E10
05 8B 86 08 3E C5 2E 0E C4 83 00 34 E2 22 9A 16 -- 067E20
00 44 5A 4B 9A 00 6A 00 6A 00 03 05 C7 E8 46 89 -- 067E30
36 FF 2E 50 F0 46 8D 16 00 54 C8 1C 9A 04 C4 83 -- 067E40
16 08 C4 83 00 4C 08 02 9A 86 0C 36 FF 2E 86 0E -- 067E50
C0 2B 50 F0 46 8D 16 50 F0 46 8D 16 50 E6 46 8D -- 067E60
2E E8 46 8B 0E C4 83 00 4C 2A 67 9A 50 EA 46 89 -- 067E70
9B EE D9 9B 00 9D E9 00 01 B8 05 89 86 08 3E C5 -- 067E80
D8 26 9B 0C 45 D9 9B 0A 7E C5 0E 76 C4 DE 5E DD -- 067E90
```

```
OE 76 C4 11 76 00 5C ED 94 9A DE 5E DC 9B 0C 64 -- 067EA0
76 C4 12 EB 0C 64 D8 26 9B 0C 45 D9 9B 0A 7E C5 -- 067EB0
E0 D9 9B 0C 64 D8 26 9B 0C 45 D9 9B 0A 7E C5 0E -- 067EC0
12 76 C4 4A 76 00 5C ED 94 9A 85 FA 1E DC 2E 9B -- 067ED0
D6 5E DD 9B 08 64 D8 26 9B 0C 45 D9 9B 12 7E C5 -- 067EE0
0E 7E C5 0E 76 C4 DE 5E DD 9B 86 02 06 DF 2E 9B -- 067EF0
76 DC 9B DE 4E DC 9B 08 64 D8 26 9B 0C 45 D9 9B -- 067F00
0C 45 D9 9B F0 5E D9 9B 05 D9 9B EC 5E D9 9B D6 -- 067F10
57 56 CB 5E 5F C9 9B C0 2B FE D0 E9 EC 66 D8 9B -- 067F20
02 6A 00 00 D8 46 C7 00 00 DA 46 C7 00 00 28 C8 -- 067F30
EE 9B 9A 50 F0 46 8D 16 02 C4 83 00 34 F6 59 9A -- 067F40
83 00 34 ED BA 9A 50 E0 46 8D 16 04 C4 83 00 34 -- 067F50
E0 46 8D 16 85 F6 36 FF 2E 85 F8 36 FF 2E 04 C4 -- 067F60
02 43 E9 03 74 C0 0B 08 C4 83 00 4C 0D 79 9A 50 -- 067F70
46 8D 16 00 94 E9 03 75 00 3D 83 85 EA 3E C5 2E -- 067F80
06 36 FF 2E 86 04 36 FF 2E 86 06 36 FF 2E 50 DA -- 067F90
2A 67 9A 50 DC 46 89 00 01 B8 86 04 36 FF 2E 86 -- 067FA0
2E 86 1A 36 FF 2E 50 DA 46 8D 16 0E C4 83 00 4C -- 067FB0
FF 2E 86 18 36 FF 2E 86 1A 36 FF 2E 86 18 36 FF -- 067FC0
36 FF 2E 86 12 36 FF 2E 86 14 36 FF 2E 86 16 36 -- 067FD0

C4 83 00 44 D8 B4 9A 50 DE 46 89 00 01 B8 86 10 -- 067FE0
36 FF 2E 86 24 36 FF 2E 86 26 36 FF 2E 00 6A 16 -- 067FF0
FF 2E 86 1E 36 FF 2E 86 20 36 FF 2E 86 22 01 FE -- 068000
00 01 D8 46 C7 0E C4 83 00 34 E2 22 9A 86 1C 36 -- 068010
46 8D 16 86 20 36 FF 2E 86 22 36 FF 2E 01 A2 E9 -- 068020
10 6A 1C 74 C0 0B 08 C4 83 00 4C 0B F2 9A 50 F0 -- 068030
9A 85 F6 36 FF 2E 85 F8 36 FF 2E 50 E0 46 8D 16 -- 068040
2E 86 22 36 FF 2E 00 CC E9 0A C4 83 00 5C ED 6E -- 068050
06 DD 2E 9B 04 C4 83 00 34 DC 20 9A 86 20 36 FF -- 068060
20 36 FF 2E 86 22 36 FF 2E 00 5C ED 99 9A 86 28 -- 068070
FF 2E 86 32 36 FF 2E 0C C4 83 00 34 E5 E7 9A 86 -- 068080
E5 51 9A 86 20 36 FF 2E 86 22 36 FF 2E 86 30 36 -- 068090
2E 50 E0 46 8D 16 50 F0 46 8D 16 08 C4 83 00 34 -- 0680A0
FF 2E 85 F8 36 FF 2E 86 20 36 FF 2E 86 22 36 FF -- 0680B0
86 26 36 FF 2E 10 C4 83 00 34 DE 5F 9A 85 F6 36 -- 0680C0
16 86 1C 36 FF 2E 86 1E 36 FF 2E 86 24 36 FF 2E -- 0680D0
FF 2E 86 22 36 FF 2E 50 F0 46 8D 16 50 E0 46 8D -- 0680E0
00 6A D8 46 89 14 C4 83 00 44 6A D2 9A 86 20 36 -- 0680F0
2E 86 22 36 FF 2E 86 24 36 FF 2E 86 26 36 FF 2E -- 068100
22 9A 86 1C 36 FF 2E 86 1E 36 FF 2E 86 20 36 FF -- 068110
00 01 3D 05 8B 86 34 3E C5 2E 0E C4 83 00 34 E2 -- 068120
FF 2E 86 14 36 FF 2E 86 16 36 FF 2E 00 6A 1E 75 -- 068130
0A C4 83 00 5C 94 FB 9A 86 10 36 FF 2E 86 12 36 -- 068140
2E 86 1E 36 FF 2E 86 38 36 FF 2E 86 3A 36 FF 2E -- 068150
FF 2E 24 6A 08 C4 83 00 4C 16 72 9A 86 1C 36 FF -- 068160
36 FF 2E 86 1A 36 FF 2E 86 38 36 FF 2E 86 3A 36 -- 068170
2E 50 DA 46 8D 16 0A C4 83 00 5C ED 6E 9A 86 18 -- 068180
FF 2E 86 1A 36 FF 2E 86 14 36 FF 2E 86 16 36 FF -- 068190
00 01 B8 86 10 36 FF 2E 86 12 36 FF 2E 86 18 36 -- 0681A0
34 3E C5 2E 12 C4 83 00 44 D2 AC 9A 50 DE 46 89 -- 0681B0
C8 57 56 CB 5E 5F C9 9B D8 46 8B 00 01 05 C7 86 -- 0681C0
3E C5 2E 6F 74 00 3D 83 86 3C 3E C5 2E 00 00 02 -- 0681D0
C7 00 00 05 C7 86 44 3E C5 2E 00 00 05 C7 86 40 -- 0681E0
6E 7F 05 3B FE 46 8B 86 48 3E C5 2E 00 01 FE 46 -- 0681F0
4E 1E 8E 2E 86 4C 3E 03 2E E7 D1 FE 7E 8B 01 FE -- 068200
3C 8B 26 86 40 36 C4 2E 17 75 00 7E 3D 05 8B 86 -- 068210
2E 15 EB 86 52 1E 8E 2E 86 50 3E 03 2E 04 FF 26 -- 068220
2E 86 54 3E 03 2E 04 FF 26 3C 8B 26 86 44 36 C4 -- 068230
C5 2E A8 EB FE 46 FF 05 88 FE 46 8B 86 56 1E 8E -- 068240
```

462

```
C5  2E  7F  05  C6  86  54  3E  C5  2E  7E  05  C6  86  50  3E  --  068250
00  01  05  C7  86  44  3E  C5  2E  00  01  05  C7  86  40  3E  --  068260
16  00  00  FE  46  C7  00  00  02  C8  57  56  CB  5E  5F  C9  --  068270
2E  86  1E  36  FF  2E  00  6A  16  6A  00  6A  50  FE  46  8D  --  068280
5E  36  FF  2E  0E  C4  83  00  4C  10  41  9A  86  1C  36  FF  --  068290
86  58  36  FF  2E  86  5A  36  FF  2E  86  5C  36  FF  2E  86  --  0682A0
00  64  4E  56  9A  00  BA  68  08  C4  83  00  34  DC  B4  9A  --  0682B0
00  BA  68  02  55  89  05  89  86  60  3E  C5  2E  02  C4  83  --  0682C0
5C  ED  6E  9A  50  52  86  5C  36  FF  2E  86  5E  36  FF  2E  --  0682D0
36  FF  2E  EC  8B  55  57  56  CB  5E  5F  C9  0A  C4  83  00  --  0682E0
1C  36  FF  2E  86  1E  36  FF  2E  86  58  36  FF  2E  86  5A  --  0682F0
00  34  E4  2E  9A  86  5C  36  FF  2E  86  5E  36  FF  2E  86  --  068300
08  3E  C5  2E  00  01  05  C7  86  64  3E  C5  2E  0C  C4  83  --  068310
2E  00  54  C8  1C  9A  00  44  5F  EB  9A  00  03  05  C7  86  --  068320
98  C8  57  56  CB  5E  5F  C9  00  00  05  C7  86  08  3E  C5  --  068330
FF  2E  02  6A  FF  6A  12  6A  00  00  FC  68  86  C7  00  03  --  068340
36  FF  2E  86  6A  36  FF  2E  86  6C  36  FF  2E  86  6E  36  --  068350
98  46  8D  16  50  52  0C  C4  83  00  5C  93  FD  9A  86  68  --  068360
05  C7  86  70  3E  C5  2E  0A  C4  83  00  5C  ED  6E  9A  50  --  068370

9A  02  4E  68  00  6A  50  FD  02  86  8D  16  57  56  00  01  --  068380
FD  06  86  89  9A  56  8B  98  46  8B  5E  5F  00  8C  00  02  --  068390
50  FC  DE  86  8D  16  00  00  FC  72  86  C7  FD  08  96  89  --  0683A0
83  00  5C  48  F8  9A  FC  72  B6  FF  50  FD  02  86  8D  16  --  0683B0
56  9A  50  09  74  00  FC  68  BE  83  FC  68  86  89  0A  C4  --  0683C0
16  00  01  05  C7  86  74  3E  C5  2E  02  C4  83  00  44  85  --  0683D0
50  FD  02  86  8D  16  57  86  76  36  FF  2E  50  AA  46  8D  --  0683E0
FC  68  BE  83  FC  68  86  89  0C  C4  83  00  5C  4D  20  9A  --  0683F0
C5  2E  02  C4  83  00  44  85  56  9A  50  09  74  00  01  FE  --  068400
4E  56  9A  50  07  C7  6B  F8  8B  E4  2A  04  8A  86  78  36  --  068410
86  7C  36  C5  2E  96  56  89  94  46  89  02  C4  83  00  64  --  068420
83  00  64  4E  56  9A  50  28  C7  6B  F8  8B  E4  2A  04  8A  --  068430
76  FF  00  6A  00  6A  FC  70  96  89  FC  6E  86  89  02  C4  --  068440
02  86  8D  16  50  FC  75  86  8D  16  50  52  94  76  FF  96  --  068450
BE  83  FC  68  86  89  14  C4  83  00  5C  4E  3D  9A  50  FD  --  068460
86  C7  02  C4  83  00  44  85  56  9A  50  09  74  00  FC  68  --  068470
6A  86  3B  E4  2A  05  8A  86  78  3E  C5  2E  00  00  FC  6A  --  068480
96  5E  8E  94  7E  03  F8  8B  07  FC  6A  86  6B  25  74  FC  --  068490
05  C7  86  4E  1E  8E  2E  86  4C  3E  03  2E  E7  D1  3D  8B  --  0684A0
C5  2E  04  45  8B  94  7E  C5  CC  EB  FC  6A  86  FF  00  7F  --  0684B0
86  8D  16  35  FF  50  FF  50  86  8D  16  05  89  86  80  3E  --  0684C0
83  FC  68  86  89  0A  C4  83  00  5C  4D  59  9A  50  FD  02  --  0684D0
16  02  C4  83  00  44  85  56  9A  50  09  74  00  FC  68  BE  --  0684E0
46  8D  16  04  C4  83  00  5C  49  0B  9A  50  FD  02  86  8D  --  0684F0
76  FF  FC  6C  86  89  04  C4  83  00  5C  94  D5  9A  50  98  --  068500
FC  70  B6  FF  04  C4  83  00  64  4E  E3  9A  94  76  FF  96  --  068510
8D  16  68  6A  04  C4  83  00  64  4E  E3  9A  FC  6E  B6  FF  --  068520
A4  9A  86  84  36  FF  2E  86  86  36  FF  2E  50  FF  6E  86  --  068530
6E  9A  50  FC  76  86  8D  16  50  52  08  C4  83  00  5C  91  --  068540
DC  B6  FF  0C  74  00  FC  DC  BE  83  0A  C4  83  00  5C  ED  --  068550
FC  CA  86  8D  16  12  6A  02  C4  83  00  44  85  56  9A  FC  --  068560
00  5C  ED  6E  9A  86  6C  36  FF  2E  86  6E  36  FF  2E  50  --  068570
EA  46  C7  00  00  7E  C8  57  56  CB  5E  5F  C9  0A  C4  83  --  068580
36  FF  2E  01  6A  01  6A  12  6A  00  00  EC  46  C7  00  00  --  068590
86  86  36  FF  2E  50  00  1E  05  86  74  06  8B  2E  86  76  --  0685A0
16  50  52  0C  C4  83  00  5C  94  45  9A  86  84  36  FF  2E  --  0685B0
00  FC  7E  83  0A  C4  83  00  5C  ED  6E  9A  50  EE  46  8D  --  0685C0
EE  46  8B  02  C4  83  00  44  85  56  9A  FC  76  FF  0B  74  --  0685D0
00  64  43  A9  9A  50  52  EC  56  89  EA  46  89  F0  56  8B  --  0685E0
8A  36  FF  2E  57  56  05  89  86  48  3E  C5  2E  04  C4  83  --  0685F0
```

463

EP 0 533 348 A2

```
8C  00  02  9A  0A  6A  00  6A  86  88  36  FF  2E  86  01  FE  --  068600
05  86  74  06  8B  2E  86  76  36  FF  2E  68  6A  5E  5F  00  --  068610
91  A4  9A  86  84  36  FF  2E  86  86  36  FF  2E  50  00  1E  --  068620
5C  ED  6E  9A  50  82  46  8D  16  50  52  08  C4  83  00  5C  --  068630
86  8E  36  FF  2E  50  D6  46  8D  16  12  6A  0A  C4  83  00  --  068640
16  66  6A  0A  C4  83  00  5C  ED  6E  9A  86  8C  36  FF  2E  --  068650
6E  9A  86  90  36  FF  2E  86  92  36  FF  2E  50  82  46  8D  --  068660
36  FF  2E  35  FF  85  F2  3E  C5  2E  0A  C4  83  00  5C  ED  --  068670
5E  20  9A  EA  76  FF  EC  76  FF  86  94  36  FF  2E  86  96  --  068680
83  00  5C  94  D5  9A  50  EE  46  8D  16  0A  C4  83  00  5C  --  068690
86  98  3E  C5  2E  EC  8B  55  57  56  CB  5E  5F  C9  04  C4  --  0686A0
E3  9A  02  75  FF  04  75  FF  0E  74  02  45  0B  04  45  8B  --  0686B0
45  0B  03  45  8B  86  9C  3E  C5  2E  04  C4  83  00  64  4E  --  0686C0
C4  83  00  64  4E  E3  9A  01  75  FF  03  75  FF  0E  74  01  --  0686D0
FF  86  A0  3E  C5  2E  EC  8B  55  57  56  CB  5E  5F  C9  04  --  0686E0
60  3E  C5  2E  04  C4  83  00  64  4E  E3  9A  35  FF  02  75  --  0686F0
C5  2E  04  C4  83  00  64  4E  E3  9A  35  FF  02  75  FF  86  --  068700
04  C4  83  00  64  4E  E3  9A  35  FF  02  75  FF  86  A4  3E  --  068710

2E  00  44  74  1E  9A  05  74  00  3D  83  86  3C  3E  C5  2E  --  068720
75  FF  86  AC  3E  C5  2E  12  74  00  3D  83  86  A8  3E  C5  --  068730
86  34  3E  C5  2E  04  C4  83  00  64  4E  E3  9A  35  FF  02  --  068740
FF  2E  86  16  36  FF  2E  00  6A  1E  75  00  01  3D  05  8B  --  068750
94  FB  9A  86  10  36  FF  2E  86  12  36  FF  2E  86  14  36  --  068760
C7  00  00  0E  C8  57  56  CB  5E  5F  C9  0A  C4  83  00  5C  --  068770
B0  3E  C5  2E  F8  46  89  00  34  D9  7E  9A  00  00  F6  46  --  068780
86  58  36  FF  2E  86  5A  36  FF  2E  26  74  00  3D  83  86  --  068790
2E  86  5E  36  FF  2E  86  1C  36  FF  2E  86  1E  36  FF  2E  --  0687A0
08  3E  C5  2E  0C  C4  83  00  34  E4  2E  9A  86  5C  36  FF  --  0687B0
36  FF  2E  00  6A  00  6A  00  6A  00  6A  00  6A  35  FF  86  --  0687C0
46  89  00  01  B8  01  6A  01  6A  86  B4  36  FF  2E  86  B6  --  0687D0
C4  83  00  54  C9  5C  9A  50  FC  46  89  00  01  B8  50  FE  --  0687E0
83  86  BC  3E  C5  2E  00  00  05  C7  86  B8  3E  C5  2E  18  --  0687F0
86  0E  36  FF  2E  00  5C  04  EE  9A  05  74  00  3D  01  FE  --  068800
9A  86  1C  36  FF  2E  86  1E  36  FF  2E  86  0C  36  FF  2E  --  068810
75  00  3D  83  86  C0  3E  C5  2E  08  C4  83  00  4C  16  72  --  068820
2E  00  44  57  40  9A  05  74  C0  0B  00  44  23  4B  9A  0E  --  068830
89  C0  2B  00  6A  00  6A  32  74  00  3D  83  86  B0  3E  C5  --  068840
36  FF  2E  86  C8  36  FF  2E  86  CA  36  FF  2E  50  FA  46  --  068850
C4  36  FF  2E  86  C6  36  FF  2E  86  5C  36  FF  2E  86  5E  --  068860
86  CC  3E  C5  2E  3D  EB  12  C4  83  00  54  CB  7F  9A  86  --  068870
75  00  06  3D  05  8B  86  D0  3E  C5  2E  0C  74  00  3D  83  --  068880
2E  16  6A  35  FF  86  D8  3E  C5  2E  50  F6  46  8D  16  27  --  068890
86  1C  36  FF  2E  86  1E  36  FF  2E  35  FF  86  D4  3E  C5  --  0688A0
00  3D  83  86  B0  3E  C5  2E  0E  C4  83  00  4C  10  41  9A  --  0688B0
E9  03  75  00  3D  83  86  CC  3E  C5  2E  00  92  E9  03  75  --  0688C0
C5  2E  79  74  00  06  3D  05  8B  86  D0  3E  C5  2E  00  85  --  0688D0
C4  83  00  64  4E  A1  9A  01  6A  50  40  05  8B  86  DC  3E  --  0688E0
7E  C5  05  8B  86  DC  3E  C5  2E  F4  56  89  F2  46  89  04  --  0688F0
36  FF  2E  50  00  01  05  F2  46  8B  52  57  56  05  88  F2  --  068900
EC  9A  35  FF  86  DC  3E  C5  2E  86  E0  36  FF  2E  86  E2  --  068910
86  1E  36  FF  2E  F2  76  FF  F4  76  FF  5E  5F  00  5C  FE  --  068920
9A  86  10  36  FF  2E  86  12  36  FF  2E  86  1C  36  FF  2E  --  068930
4E  E3  9A  F2  76  FF  F4  76  FF  0C  C4  83  00  54  CD  C1  --  068940
86  1E  36  FF  2E  00  6A  00  6A  20  EB  04  C4  83  00  64  --  068950
9A  86  10  36  FF  2E  86  12  36  FF  2E  86  1C  36  FF  2E  --  068960
54  A2  55  9A  00  54  CF  43  9A  0C  C4  83  00  54  CD  C1  --  068970
34  DA  22  9A  00  54  C8  1C  9A  0A  74  00  F8  7E  83  00  --  068980
00  00  EC  46  C7  00  00  24  C8  57  56  CB  5E  5F  C9  00  --  068990
EB  00  01  B8  05  75  00  06  3D  05  8B  85  EE  3E  C5  2E  --  0689A0
```

464

```
C5 2E F8 46 89 00 34 D9 DO 9A F4 46 89 CO 2B 02 -- 0689B0
00 3D 83 86 E4 3E C5 2E 62 74 00 3D 83 86 3C 3E -- 0689C0
EE 36 FF 2E 86 FO 36 FF 2E 86 F2 36 FF 2E 32 74 -- 0689D0
86 E8 36 FF 2E 86 EA 36 FF 2E 86 EC 36 FF 2E 86 -- 0689E0
83 00 34 E4 AO 9A 86 94 36 FF 2E 86 96 36 FF 2E -- 0689F0
86 EC 36 FF 2E 86 EE 36 FF 2E 26 EB 10 C4 01 FE -- 068A00
2E 86 96 36 FF 2E 86 E8 36 FF 2E 86 EA 36 FF 2E -- 068A10
00 6A 03 6A OC C4 83 00 34 E4 2E 9A 86 94 36 FF -- 068A20
36 FF 2E 86 F6 36 FF 2E 00 6A 00 6A 00 6A 00 6A -- 068A30
00 01 B8 50 FE 46 89 00 01 B8 01 6A 01 6A 86 F4 -- 068A40
FA 36 FF 2E 18 C4 83 00 54 C9 5C 9A 50 FC 46 89 -- 068A50
86 E8 36 FF 2E 86 EA 36 FF 2E 86 F8 36 FF 2E 86 -- 068A60
40 9A 05 75 00 F4 7E 83 08 C4 83 00 4C 16 72 9A -- 068A70
46 8D 16 48 74 00 3D 83 86 3C 3E C5 2E 00 44 57 -- 068A80
CO 2B 00 6A 00 6A 04 C4 83 00 4C 05 BE 9A 50 EE -- 068A90
FF 2E 86 96 36 FF 2E 50 EE 46 8D 16 50 FA 46 89 -- 068AA0
CB 7F 9A 86 90 36 FF 2E 86 92 36 FF 2E 86 94 36 -- 068AB0

00 64 4E E3 9A FO 76 FF F2 76 FF 12 C4 83 00 54 -- 068AC0
86 CC 3E C5 2E 4D 74 00 0A 7E 83 53 EB 04 C4 83 -- 068AD0
2E 17 74 00 3D 83 86 E4 3E C5 2E 0A 75 00 3D 83 -- 068AE0
50 EC 46 8D 16 2D 75 00 06 3D 05 8B 86 DO 3E C5 -- 068AF0
2E 16 6A 7F 6A 50 EC 46 8D 16 09 EB 35 6A 7F 6A -- 068B00
86 E8 36 FF 2E 86 EA 36 FF 2E 35 FF 86 FC 3E C5 -- 068B10
00 3D 83 86 3C 3E C5 2E 0E C4 83 00 4C 10 41 9A -- 068B20
DO 3E C5 2E 21 74 00 3D 83 86 CC 3E C5 2E 2B 74 -- 068B30
88 05 8B 86 44 3E C5 2E 15 74 00 06 3D 05 8B 86 -- 068B40
6A 00 6A 04 EB 50 EA 46 8D 16 7F EB 46 C6 EA 46 -- 068B50
86 6A 36 FF 2E 86 E8 36 FF 2E 86 EA 36 FF 2E 00 -- 068B60
CF 43 9A OC C4 83 00 54 CD C1 9A 86 68 36 FF 2E -- 068B70
DA 22 9A 00 54 C8 1C 9A 0A 74 00 F8 7E 83 00 54 -- 068B80
46 8D 16 00 54 C8 1C 9A 39 74 00 F4 7E 83 00 34 -- 068B90
4C 08 02 9A 86 F8 36 FF 2E 86 FA 36 FF 2E 50 DC -- 068BA0
8D 16 50 DC 46 8D 16 50 EC 46 8D 16 08 C4 83 00 -- 068BB0
C4 83 00 4C 2A 67 9A 50 F6 46 89 CO 2B 50 DC 46 -- 068BC0
00 00 F8 46 C7 00 00 0E C8 57 56 CB 5E 5F C9 0E -- 068BD0
00 64 40 DO 9A 6F 6A 03 6A 16 6A 50 F8 46 8D 16 -- 068BE0
00 6A 00 6A 00 6A 35 FF 86 08 3E C5 2E 0A C4 83 -- 068BF0
87 00 36 FF 2E 87 02 36 FF 2E 00 6A 00 6A 01 FE -- 068C00
F6 46 89 00 01 B8 50 F4 46 89 CO 2B 01 6A 01 6A -- 068C10
BE 9A 50 FA 46 8D 16 18 C4 83 00 54 C9 5C 9A 50 -- 068C20
50 F2 46 89 CO 2B 00 6A 00 6A 04 C4 83 00 4C 05 -- 068C30
2E 86 94 36 FF 2E 86 96 36 FF 2E 50 FA 46 8D 16 -- 068C40
C4 83 00 54 CB 7F 9A 86 90 36 FF 2E 86 92 36 FF -- 068C50
00 00 10 C8 57 56 CB 5E 5F C9 00 54 CF 43 9A 12 -- 068C60
3E C5 2E 04 C4 83 00 34 EE 9B 9A 50 FO 46 8D 16 -- 068C70
9A 50 FO 46 8D 16 00 5C ED 99 9A 05 DD 9B 87 04 -- 068C80
FF 2E 86 F2 36 FF 2E 00 6A OC C4 83 00 34 E5 E7 -- 068C90
36 FF 2E 86 EA 36 FF 2E 50 FO 46 8D 16 86 FO 36 -- 068CA0
9A 50 FO 46 8D 16 0E C4 83 00 34 E2 22 9A 86 E8 -- 068CB0
1E C8 57 56 CB 5E 5F C9 9B 04 C4 83 00 34 F7 F7 -- 068CC0
74 00 3D 83 87 08 3E C5 2E 00 00 E2 46 C7 00 00 -- 068CD0
46 8D 16 50 E4 46 8D 16 57 56 00 00 E4 46 C7 48 -- 068CE0
2E 0A 76 FF OC 76 FF 5E 5F 00 5C CO 58 9A 50 E2 -- 068CF0
C4 83 00 5C 97 1E 9A 87 OC 36 FF 2E 87 0E 36 FF -- 068D00
10 36 FF 2E 87 12 36 FF 2E FC 76 FF FE 76 FF 08 -- 068D10
C8 57 56 CB 5E 5F C9 08 C4 83 00 5C 97 1E 9A 87 -- 068D20
36 FF 2E 00 4C 01 1C 9A 00 00 EC 46 C7 00 00 14 -- 068D30
FF 04 C4 83 00 4C 13 CD 9A 86 68 36 FF 2E 86 6A -- 068D40
EE 46 C7 04 C4 83 00 4C 05 2E 9A 0A 76 FF OC 76 -- 068D50
```

465

```
03 2E E7 D1 EE 7E 8B 18 74 01 00 EE 7E 81 00 00 -- 068D60
EB EE 46 FF 00 7E 05 C7 86 4E 1E 8E 2E 86 4C 3E -- 068D70
36 FF 2E 86 6C 36 FF 2E 86 6E 36 FF 2E 12 6A E1 -- 068D80
2E 0A C4 83 00 5C ED 6E 9A 87 14 36 FF 2E 87 16 -- 068D90
12 6A 00 44 70 B8 9A 05 74 00 3D 83 86 3C 3E C5 -- 068DA0
FF 2E 86 6C 36 FF 2E 86 6E 36 FF 2E 01 6A FF 6A -- 068DB0
0C C4 83 00 5C 93 FD 9A 86 68 36 FF 2E 86 6A 36 -- 068DC0
5C ED 6E 9A 87 18 36 FF 2E 87 1A 36 FF 2E 50 52 -- 068DD0
C5 2E 02 55 8B 05 8B 87 18 3E C5 2E 0A C4 83 00 -- 068DE0
36 FF 2E 50 EC 46 8D 16 02 55 89 05 89 87 1C 3E -- 068DF0
54 F6 E3 9A 35 FF 52 87 20 36 FF 2E 87 22 01 FE -- 068E00
00 68 26 74 00 3D 83 87 24 3E C5 2E 0C C4 83 00 -- 068E10
86 A4 3E C5 2E 04 C4 83 00 64 4E A1 9A 04 6A 02 -- 068E20
44 85 56 9A 10 6D 68 0B 75 C2 0B 02 55 89 05 89 -- 068E30
87 1C 3E C5 2E 03 6A 50 EC 46 8D 16 02 C4 83 00 -- 068E40
36 FF 2E 0A C4 83 00 5C 61 60 9A 35 FF 02 75 FF -- 068E50

2E 04 C4 83 00 5C 94 D5 9A 87 18 36 FF 2E 87 1A -- 068E60
FF 2E 86 EA 36 FF 2E 87 20 36 FF 2E 87 22 36 FF -- 068E70
86 EA 36 FF 2E 08 C4 83 00 4C 15 55 9A 86 E8 36 -- 068E80
9A 86 F0 36 FF 2E 86 F2 36 FF 2E 86 E8 36 FF 2E -- 068E90
E8 36 FF 2E 86 EA 36 FF 2E 08 C4 83 00 34 DB 84 -- 068EA0
00 34 DC 7E 9A 87 28 36 FF 2E 87 2A 36 FF 2E 86 -- 068EB0
73 01 9A 21 74 00 3D 83 86 3C 3E C5 2E 08 C4 83 -- 068EC0
EE 36 FF 2E 86 94 36 FF 2E 86 96 36 FF 2E 00 44 -- 068ED0
4B 9A 08 C4 83 00 34 DC B4 9A 86 EC 36 FF 2E 86 -- 068EE0
46 8D 16 86 E8 36 FF 2E 86 EA 36 FF 2E 00 44 6F -- 068EF0
9A 50 F0 46 8D 16 08 C4 83 00 34 DB D2 9A 50 F0 -- 068F00
00 14 C8 57 56 CB 5E 5F C9 04 C4 83 00 34 F7 F7 -- 068F10
03 75 00 3D 83 87 24 3E C5 2E 00 00 FC 46 C7 00 -- 068F20
36 FF 2E 86 1C 36 FF 2E 86 1E 36 FF 2E 00 C9 E9 -- 068F30
2E 08 C4 83 00 34 DB 84 9A 86 24 36 FF 2E 86 26 -- 068F40
FF 2E 86 32 36 FF 2E 86 1C 36 FF 2E 86 1E 36 FF -- 068F50
86 B0 3E C5 2E 08 C4 83 00 34 DC 7E 9A 86 30 36 -- 068F60
2E 86 5C 36 FF 2E 86 5E 36 FF 2E 1C 74 00 3D 83 -- 068F70
C4 83 00 34 DC B4 9A 86 58 36 FF 2E 86 5A 36 FF -- 068F80
00 5C D3 78 9A 86 14 36 FF 2E 86 16 36 FF 2E 08 -- 068F90
2E 86 38 36 FF 2E 86 3A 36 FF 2E 24 6A 04 C4 83 -- 068FA0
C4 83 00 5C ED 6E 9A 86 18 36 FF 2E 86 1A 36 FF -- 068FB0
86 14 36 FF 2E 86 16 36 FF 2E 50 FC 46 8D 16 0A -- 068FC0
2E 86 12 36 FF 2E 86 18 36 FF 2E 86 1A 36 FF 2E -- 068FD0
00 44 D2 AC 9A 50 FE 46 89 00 01 B8 86 10 36 FF -- 068FE0
32 36 FF 2E 00 01 05 C7 86 34 3E C5 2E 12 C4 83 -- 068FF0
36 FF 2E 87 2E 36 FF 2E 87 30 36 FF 2E 87 01 FE -- 069000
22 36 FF 2E 85 F6 36 FF 2E 85 F8 36 FF 2E 87 2C -- 069010
00 34 E6 A4 9A 50 EC 46 8D 16 86 20 36 FF 2E 86 -- 069020
46 8D 16 2C 74 00 3D 83 87 24 3E C5 2E 14 C4 83 -- 069030
68 03 6A 50 05 89 87 34 3E C5 2E 00 02 B8 50 FC -- 069040
6A 50 EC 46 8D 16 0A C4 83 00 64 40 D0 9A 01 91 -- 069050
FF 2E 86 26 36 FF 2E 06 C4 83 00 34 F6 59 9A 00 -- 069060
36 FF 2E 86 1C 36 FF 2E 86 1E 36 FF 2E 86 24 36 -- 069070
20 36 FF 2E 86 22 36 FF 2E 85 F6 36 FF 2E 85 F8 -- 069080
C5 2E 14 C4 83 00 44 67 F4 9A 50 EC 46 8D 16 86 -- 069090
83 00 34 F7 75 9A 50 EC 46 8D 16 35 FF 87 24 3E -- 0690A0
8D 16 86 24 36 FF 2E 86 26 36 FF 2E 00 6A 06 C4 -- 0690B0
E2 22 9A 86 1C 36 FF 2E 86 1E 36 FF 2E 50 EC 46 -- 0690C0
2E 26 74 00 3D 83 86 B0 3E C5 2E 0E C4 83 00 34 -- 0690D0
FF 2E 86 1E 36 FF 2E 86 58 36 FF 2E 86 5A 36 FF -- 0690E0
E4 2E 9A 86 5C 36 FF 2E 86 5E 36 FF 2E 86 1C 36 -- 0690F0
2E 86 0C 36 FF 2E 86 0E 36 FF 2E 0C C4 83 00 34 -- 069100
```

466

```
C4 83 00 4C 16 72 9A 86 1C 36 FF 2E 86 1E 36 FF -- 069110
00 00 FE 46 C7 00 00 04 C8 57 56 CB 5E 5F C9 08 -- 069120
50 05 89 87 34 3E C5 2E 00 03 B8 50 FE 46 8D 16 -- 069130
3E C5 2E 0A C4 83 00 64 40 D0 9A 01 91 68 03 6A -- 069140
3C 3E C5 2E 86 FC 36 C4 2E 31 75 00 3D 83 86 E4 -- 069150
2C F7 26 C0 2B 02 EB 00 01 B8 05 75 00 3D 83 86 -- 069160
86 E8 36 FF 2E 86 EA 36 FF 2E 50 01 6A FC 46 89 -- 069170
00 3D 83 87 38 3E C5 2E 08 C4 83 00 4C 11 96 9A -- 069180
44 74 1E 9A 05 74 00 3D 83 86 3C 3E C5 2E 1F 74 -- 069190
EB 04 C4 83 00 44 7A 9F 9A 0A 76 FF 0C 76 FF 00 -- 0691A0
0A 7E C5 05 8B 86 3C 3E C5 2E 00 44 79 DC 9A 11 -- 0691B0
E4 3E C5 2E 65 75 00 3D 83 87 3C 3E C5 2E 05 01 -- 0691C0
C5 2E 00 02 B8 50 FE 46 8D 16 5B 75 00 3D 83 86 -- 0691D0
00 64 40 D0 9A 01 91 68 03 6A 50 05 89 87 34 3E -- 0691E0
46 8D 16 2A 75 00 3D 83 86 B0 3E C5 2E 0A C4 83 -- 0691F0

01 F6 68 03 6A 35 FF 86 D4 3E C5 2E 50 FE 01 FE -- 069200
76 FF 0B 74 00 FE 7E 83 0A C4 83 00 64 40 D0 9A -- 069210
8B 9A 00 44 6C AE 9A 02 C4 83 00 64 59 FE 9A FE -- 069220
FE 46 C7 00 00 02 C8 57 56 CB 5E 5F C9 00 44 7C -- 069230
34 EE 9B 9A 86 20 36 FF 2E 86 22 36 FF 2E 00 00 -- 069240
BA 9A 85 F6 36 FF 2E 85 F8 36 FF 2E 04 C4 83 00 -- 069250
36 FF 2E 86 0E 36 FF 2E 24 6A 04 C4 83 00 34 ED -- 069260
5C ED 6E 9A 86 38 36 FF 2E 86 3A 36 FF 2E 86 0C -- 069270
2E 02 C4 83 00 64 4E 56 9A 00 8A 68 0A C4 83 00 -- 069280
1E 36 FF 2E 00 8A 68 02 55 89 05 89 86 A0 3E C5 -- 069290
0A C4 83 00 5C ED 6E 9A 50 52 86 1C 36 FF 2E 86 -- 0692A0
4E 56 9A 00 BA 68 2C 74 00 3D 83 86 B0 3E C5 2E -- 0692B0
68 02 55 89 05 89 86 60 3E C5 2E 02 C4 83 00 64 -- 0692C0
6E 9A 50 52 86 5C 36 FF 2E 86 5E 36 FF 2E 00 BA -- 0692D0
2E EC 8B 55 57 56 CB 5E 5F C9 0A C4 83 00 5C ED -- 0692E0
00 05 C7 86 AC 3E C5 2E 00 00 05 C7 86 A8 3E C5 -- 0692F0
00 00 02 C8 57 56 CB 5E 5F C9 00 00 02 45 C7 00 -- 069300
2E 57 75 00 3D 83 87 24 3E C5 2E 00 00 FE 46 C7 -- 069310
FF 2E 87 46 36 FF 2E 21 74 00 3D 80 87 40 3E C5 -- 069320
C4 83 00 64 5A 20 9A 57 87 42 36 FF 2E 87 44 36 -- 069330
38 3E C5 2E C0 2B 02 EB 00 01 B8 05 74 C0 0B 08 -- 069340
38 3E C5 2E 00 4C 13 55 9A 05 74 C0 0B 05 89 87 -- 069350
3E C5 2E C0 2B 02 EB 00 01 B8 05 75 00 3D 83 87 -- 069360
87 48 3E C5 2E 00 4C 13 55 9A 05 EB 05 89 87 48 -- 069370
2B 13 74 00 3D 83 87 3C 3E C5 2E 1D 74 00 3D 83 -- 069380
E9 05 89 87 3C 3E C5 2E 05 89 87 48 3E C5 2E C0 -- 069390
44 7A 3E 9A 87 4C 36 FF 2E 87 4E 36 FF 2E 02 00 -- 0693A0
28 9A 87 50 36 FF 2E 87 52 36 FF 2E 04 C4 83 00 -- 0693B0
9A 08 74 C0 0B 05 89 0A 7E C5 04 C4 83 00 5C EF -- 0693C0
56 9A 00 01 05 C7 0A 7E C5 01 CB E9 00 44 84 A1 -- 0693D0
00 3D 83 87 24 3E C5 2E 00 44 67 06 9A 00 44 80 -- 0693E0
04 C4 83 00 44 7E 93 9A 0A 76 FF 0C 76 FF 11 75 -- 0693F0
2E 00 44 7F A3 9A 00 54 C8 1C 9A 00 95 E9 01 FE -- 069400
00 3D 83 86 B0 3E C5 2E 00 01 05 C7 85 F2 3E C5 -- 069410
D0 9A 01 F6 68 03 6A 01 6A 50 FE 46 8D 16 25 75 -- 069420
9A FE 76 FF 0B 74 00 FE 7E 83 0A C4 83 00 64 40 -- 069430
34 3E C5 2E 00 34 F1 06 9A 02 C4 83 00 64 59 FE -- 069440
00 44 7A 9F 9A 0A 76 FF 0C 76 FF 00 03 05 C7 87 -- 069450
44 7C 8B 9A 00 02 05 C7 87 34 3E C5 2E 04 C4 83 -- 069460
89 86 D4 3E C5 2E 05 8B 05 FF 87 54 3E C5 2E 00 -- 069470
89 86 FC 3E C5 2E 05 8B 05 FF 87 54 3E C5 2E 05 -- 069480
3D 05 8B 0A 7E C5 00 00 05 C7 87 24 3E C5 2E 05 -- 069490
C0 2B 0C 74 00 3D 83 86 CC 3E C5 2E 0A 74 00 03 -- 0694A0
83 87 3C 3E C5 2E FE D9 E9 05 89 87 38 3E C5 2E -- 0694B0
```

467

```
34 3E C5 2E 00 02 B8 50 FE 46 8D 16 69 75 00 3D -- 0694C0
C4 83 00 64 40 D0 9A 01 91 68 03 6A 50 05 89 87 -- 0694D0
50 FE 46 8D 16 29 75 00 3D 83 86 B0 3E C5 2E 0A -- 0694E0
35 FF 86 D4 3E C5 2E 16 6A 35 FF 86 D8 3E C5 2E -- 0694F0
83 00 4C 10 41 9A 86 1C 36 FF 2E 86 1E 36 FF 2E -- 069500
C5 2E 0A 75 00 3D 83 87 48 3E C5 2E 19 EB 0E C4 -- 069510
46 8D 16 00 44 70 64 9A 05 74 00 3D 83 87 38 3E -- 069520
68 03 6A 50 05 89 87 34 3E C5 2E 00 03 B8 50 FE -- 069530
44 77 0B 9A 01 6A 0A C4 83 00 64 40 D0 9A 01 91 -- 069540
02 B8 50 FE 46 8D 16 00 54 C8 1C 9A 02 C4 83 00 -- 069550
D0 9A 01 91 68 03 6A 50 05 89 87 34 3E C5 2E 00 -- 069560
2E 05 89 87 38 3E C5 2E C0 2B 0A C4 83 00 64 40 -- 069570
67 53 9A 05 89 87 3C 3E C5 2E 05 89 87 48 3E C5 -- 069580
44 7A 3E 9A 87 58 36 FF 2E 87 5A 36 FF 2E 00 44 -- 069590

46 C7 00 00 04 C8 57 56 CB 5E 5F C9 04 C4 83 00 -- 0695A0
5D 9A 08 75 00 0A 7E 83 00 00 FC 46 C7 00 00 FE -- 0695B0
C5 2E 00 02 B8 50 FC 46 8D 16 01 6D E9 00 44 74 -- 0695C0
00 64 40 D0 9A 01 91 68 03 6A 50 05 89 87 34 3E -- 0695D0
0A 76 FF 0B 74 00 3D 83 86 E4 3E C5 2E 0A C4 83 -- 0695E0
AE 9A 44 74 01 0A 7E 83 02 C4 83 00 34 D5 16 9A -- 0695F0
36 FF 2E 86 22 36 FF 2E FE 46 89 00 44 6C 01 FE -- 069600
34 F1 F0 9A 85 F6 36 FF 2E 85 F8 36 FF 2E 86 20 -- 069610
05 8B 87 54 3E C5 2E 86 FC 36 C4 2E 08 C4 83 00 -- 069620
3E C5 2E 48 05 8B 86 D4 3E C5 2E 0F 75 04 3B 26 -- 069630
FF 02 75 FF 86 A0 3E C5 2E 00 8A 68 05 89 87 54 -- 069640
00 5C ED 6E 9A 86 1C 36 FF 2E 86 1E 36 FF 2E 35 -- 069650
FF 2E 86 0E 36 FF 2E 1C 74 01 0A 7E 83 0A C4 83 -- 069660
16 72 9A 86 1C 36 FF 2E 86 1E 36 FF 2E 86 0C 36 -- 069670
68 31 74 00 3D 83 86 B0 3E C5 2E 08 C4 83 00 4C -- 069680
5E 36 FF 2E 35 FF 02 75 FF 86 60 3E C5 2E 00 BA -- 069690
7E 83 0A C4 83 00 5C ED 6E 9A 86 5C 36 FF 2E 86 -- 0696A0
28 EB 00 54 C8 1C 9A 00 44 5F EB 9A 34 74 00 FE -- 0696B0
86 D8 3E C5 2E 50 FC 46 8D 16 22 74 01 0A 7E 83 -- 0696C0
86 1C 36 FF 2E 86 1E 36 FF 2E 01 6A 16 6A 35 FF -- 0696D0
00 05 C7 86 34 3E C5 2E 0E C4 83 00 4C 10 41 9A -- 0696E0
89 86 D4 3E C5 2E 05 89 86 FC 3E C5 2E C0 2B 00 -- 0696F0
C7 87 24 3E C5 2E 00 00 05 C7 85 F2 3E C5 2E 05 -- 069700
38 3E C5 2E 00 00 05 C7 87 48 3E C5 2E 00 01 05 -- 069710
05 74 01 0A 7E 83 00 44 74 5D 9A 00 00 05 C7 87 -- 069720
C7 00 00 04 C8 57 56 CB 5E 5F C9 00 44 67 53 9A -- 069730
99 E9 03 75 00 3D 83 85 F2 3E C5 2E 00 00 FE 46 -- 069740
8D 16 00 82 E9 03 74 00 3D 83 86 E4 3E C5 2E 00 -- 069750
03 6A 50 05 89 87 34 3E C5 2E 00 03 B8 50 FE 46 -- 069760
86 FC 36 C4 2E 0A C4 83 00 64 40 D0 9A 01 91 68 -- 069770
2B 02 EB 00 01 B8 05 75 00 3D 83 86 3C 3E C5 2E -- 069780
2E 86 EA 36 FF 2E 50 01 6A FC 46 89 2C F7 26 C0 -- 069790
B0 3E C5 2E 08 C4 83 00 4C 11 96 9A 86 E8 36 FF -- 0697A0
86 D4 3E C5 2E 50 FE 46 8D 16 2A 75 00 3D 83 86 -- 0697B0
83 0A C4 83 00 64 40 D0 9A 01 F6 68 03 6A 35 FF -- 0697C0
02 C4 83 00 64 59 FE 9A FE 76 FF 0B 74 00 FE 7E -- 0697D0
57 56 CB 5E 5F C9 02 C4 83 00 44 83 12 9A 02 6A -- 0697E0
64 59 FE 9A 0A 76 FF 0B 74 00 0A 7E 83 EC 8B 55 -- 0697F0
29 74 00 3D 83 87 5C 3E C5 2E 02 C4 83 00 01 FE -- 069800
2E 86 D4 36 C4 2E 1F 75 00 3D 83 86 B0 3E C5 2E -- 069810
87 5E 36 FF 2E 0E 75 04 3B 26 05 8B 87 5C 3E C5 -- 069820
3D 83 87 5C 3E C5 2E 04 C4 83 00 4C 06 B7 9A 57 -- 069830
36 C4 2E 1F 75 00 3D 83 86 3C 3E C5 2E 29 74 00 -- 069840
FF 2E 0E 75 04 3B 26 05 8B 87 5C 3E C5 2E 86 FC -- 069850
FF 2E 03 6A 04 C4 83 00 4C 06 B7 9A 57 87 5E 36 -- 069860
```

468

EP 0 533 348 A2

```
06 C4 83 00 5C EF 44 9A 87 50 36 FF 2E 87 52 36 -- 069870
00 3C AE 54 00 3C 86 9A 00 3C 98 DC CB 5E 5F C9 -- 069880
9C 26 00 02 3E B0 C6 F7 A0 B5 ED 8D 00 3C 9C 16 -- 069890
96 60 00 3C 86 A2 00 3C AE C6 00 3C AE 5A 00 3C -- 0698A0
96 1A 00 3C 9C 06 00 3C 90 36 00 3C 96 72 00 3C -- 0698B0
96 5E 00 3C 95 FA 3F F6 84 86 AD 2D CB 14 00 3C -- 0698C0
96 D8 00 3C 96 D6 00 3C 96 D0 00 3C 96 96 00 3C -- 0698D0
9A A6 00 3C 99 A6 00 3C 96 DC 00 3C 96 D4 00 3C -- 0698E0
27 C4 00 3C 9C 02 00 6C 28 74 00 3C 96 3A 00 3C -- 0698F0
9B B8 00 3C 96 D2 00 3C 95 62 00 3C 95 0E 00 6C -- 069900
87 6E 00 3C 96 DA 00 3C 9B FB 00 3C 9B FD 00 3C -- 069910
93 10 00 3C 95 74 00 3C 94 EA 00 3C 94 FF 00 3C -- 069920
96 5A 00 3C 9B FE 00 3C 93 B6 00 3C 93 B0 00 3C -- 069930

56 D4 00 3C 90 C2 00 6C 2B FA 00 6C 2B F8 00 3C -- 069940
AE 60 00 24 31 46 00 3C B3 1A 00 3C 92 4E 00 44 -- 069950
96 CC 00 6C 23 64 00 6C 22 E8 00 6C 29 14 00 3C -- 069960
22 E6 00 3C B4 2A 00 3C B3 16 00 3C 91 10 00 3C -- 069970
5A 42 00 3C 96 2A 00 3C 96 4A 00 3C 92 86 00 6C -- 069980
96 C2 00 44 5F E2 00 3C 96 CE 00 3C 93 CA 00 44 -- 069990
94 D8 00 3C 92 5E 00 3C 92 56 00 3C AE 5C 00 3C -- 0699A0
92 80 00 3C 93 EE 00 3C 94 D4 00 3C 9B A6 00 3C -- 0699B0
96 CA 00 3C 96 BA 00 3C 95 DA 00 3C 96 0A 00 3C -- 0699C0
94 DB 00 6C 1C 06 00 3C 92 7E 00 3C 92 84 00 3C -- 0699D0
86 9C 00 3C 98 DE 00 3C 92 63 00 3C 92 82 00 3C -- 0699E0
6A EC 8B 55 57 56 00 3C 86 9E 00 3C 92 71 00 3C -- 0699F0
FF 2E A4 52 36 FF 2E 0A 76 FF 0C 76 FF 14 01 FE -- 069A00
C5 2E 0E 46 8B 0A C4 83 00 5C ED 6E 9A A4 50 36 -- 069A10
A4 58 3E C5 2E 12 56 8B 10 46 8B 05 89 A4 54 3E -- 069A20
7E 83 EC 8B 55 57 56 CB 5E 5F C9 02 55 89 05 89 -- 069A30
46 8B 0A 46 89 05 8B A4 5C 3E C5 2E 0A 75 14 0A -- 069A40
A7 FF 2E D8 8B E0 D1 01 72 E9 03 76 00 16 3D 0A -- 069A50
88 C7 88 93 88 5E 88 5E 88 5E 88 29 87 F4 87 C6 -- 069A60
89 2F 89 2F 89 2F 89 2F 89 2F 88 29 88 FB 88 FB -- 069A70
88 29 88 29 89 2F 89 2F 89 2F 89 2F 89 2F 89 2F -- 069A80
83 00 64 4E E3 9A 35 FF 02 75 FF A4 60 3E C5 2E -- 069A90
60 3E C5 2E 02 55 8B 05 8B A4 58 3E C5 2E 04 C4 -- 069AA0
3E C5 2E 05 8B A4 54 3E C5 2E 02 55 89 05 89 A4 -- 069AB0
9A 35 FF 02 75 FF A4 68 3E C5 2E 01 04 E9 A4 64 -- 069AC0
55 8B 05 8B A4 58 3E C5 2E 04 C4 83 00 64 4E E3 -- 069AD0
A4 54 3E C5 2E 02 55 89 05 89 A4 68 3E C5 2E 02 -- 069AE0
FF A4 70 3E C5 2E 00 CF E9 A4 6C 3E C5 2E 05 8B -- 069AF0
58 3E C5 2E 04 C4 83 00 64 4E E3 9A 35 FF 02 75 -- 069B00
02 55 89 05 89 A4 70 3E C5 2E 02 55 8B 05 8B A4 -- 069B10
2E 00 9A E9 A4 74 3E C5 2E 05 8B A4 54 3E C5 2E -- 069B20
C4 83 00 64 4E E3 9A 35 FF 02 75 FF A4 78 3E C5 -- 069B30
A4 78 3E C5 2E 02 55 8B 05 8B A4 58 3E C5 2E 04 -- 069B40
7C 3E C5 2E 05 8B A4 54 3E C5 2E 02 55 89 05 89 -- 069B50
4E E3 9A 35 FF 02 75 FF A4 80 3E C5 2E 66 EB A4 -- 069B60
2E 02 55 8B 05 8B A4 58 3E C5 2E 04 C4 83 00 64 -- 069B70
05 8B A4 54 3E C5 2E 02 55 89 05 89 A4 80 3E C5 -- 069B80
FF 02 75 FF A4 88 3E C5 2E 32 EB A4 84 3E C5 2E -- 069B90
05 8B A4 58 3E C5 2E 04 C4 83 00 64 4E E3 9A 35 -- 069BA0
3E C5 2E 02 55 89 05 89 A4 88 3E C5 2E 02 55 8B -- 069BB0
56 CB 5E 5F C9 05 89 A4 8C 3E C5 2E 05 8B A4 54 -- 069BC0
8B A4 5C 3E C5 2E 0A 75 14 0A 7E 83 EC 8B 55 57 -- 069BD0
D1 01 B2 E9 03 76 00 16 3D 0A 46 8B 0A 46 89 05 -- 069BE0
8A 0A 8A 0A 89 B3 89 8A 89 5C A7 FF 2E D8 8B E0 -- 069BF0
8B 05 89 B3 8A D4 8A D4 8A 89 8A 3F 8A 0A 01 FE -- 069C00
8B 05 8B 05 8B 05 8B 05 8B 05 8B 05 8B 05 8B 05 -- 069C10
```

469

```
2E A4 52 36 FF 2E 14 6A 89 B3 89 B3 8B 05 8B 05 -- 069C20
6E 9A A4 90 36 FF 2E A4 92 36 FF 2E A4 50 36 FF -- 069C30
47 E9 A4 94 3E C5 2E 00 FF B8 0A C4 83 00 5C ED -- 069C40
36 FF 2E A4 50 36 FF 2E A4 52 36 FF 2E 14 6A 01 -- 069C50
56 0A C4 83 00 5C ED 6E 9A A4 98 36 FF 2E A4 9A -- 069C60
9A 08 6A 00 6A A4 9C 36 FF 2E A4 9E 36 FF 2E 57 -- 069C70
36 FF 2E A4 A2 36 FF 2E 57 56 5E 5F 00 8C 00 02 -- 069C80
EC 9A 04 6A A4 A4 36 FF 2E A4 A6 36 FF 2E A4 A0 -- 069C90
2E A4 52 36 FF 2E 14 6A 00 FB E9 5E 5F 00 5C FE -- 069CA0
6E 9A A4 A8 36 FF 2E A4 AA 36 FF 2E A4 50 36 FF -- 069CB0
36 FF 2E A4 AE 36 FF 2E 57 56 0A C4 83 00 5C ED -- 069CC0
2E 14 6A C6 EB 00 8C 00 02 9A 08 6A 00 6A A4 AC -- 069CD0

FF 2E A4 B2 36 FF 2E A4 50 36 FF 2E A4 52 36 FF -- 069CE0
36 FF 2E 08 6A 0A C4 83 00 5C ED 6E 9A A4 B0 36 -- 069CF0
B4 36 FF 2E A4 B6 36 FF 2E A4 B8 36 FF 2E A4 BA -- 069D00
A4 BE 36 FF 2E 57 56 0A C4 83 00 5C ED 6E 9A A4 -- 069D10
FF 2E A4 52 36 FF 2E 14 6A AB EB A4 BC 36 FF 2E -- 069D20
ED 6E 9A A4 C0 36 FF 2E A4 C2 36 FF 2E A4 50 36 -- 069D30
C8 36 FF 2E A4 CA 36 FF 2E 08 6A 0A C4 83 00 5C -- 069D40
00 5C ED 6E 9A A4 C4 36 FF 2E A4 C6 36 FF 2E A4 -- 069D50
E9 A4 CC 36 FF 2E A4 CE 36 FF 2E 57 56 0A C4 83 -- 069D60
FF 2E A4 50 36 FF 2E A4 52 36 FF 2E 14 6A FF 60 -- 069D70
0A C4 83 00 5C ED 6E 9A A4 D0 36 FF 2E A4 D2 36 -- 069D80
45 89 04 45 89 06 45 89 A4 D4 3E C5 2E 00 64 B8 -- 069D90
60 3E C5 2E EC 8B 55 57 56 CB 5E 5F C9 05 89 02 -- 069DA0
36 FF 2E 35 FF A4 64 3E C5 2E 35 FF 02 75 FF A4 -- 069DB0
9B 0A C4 83 00 44 87 60 9A A4 90 36 FF 2E A4 92 -- 069DC0
D9 9B 0C 55 D9 9B A4 D8 3E C5 2E A4 DC 06 DF 2E -- 069DD0
DE 3E C5 2E 00 FF B8 1D D9 9B 04 55 D9 9B 08 55 -- 069DE0
2E 57 56 05 88 E4 2A 01 45 88 E4 2A 02 45 88 A4 -- 069DF0
A4 A6 36 FF 2E A4 A0 36 FF 2E A4 A2 36 FF 01 FE -- 069E00
BA 9A 5E 5F 00 5C FE EC 9A 04 6A A4 A4 36 FF 2E -- 069E10
3E C5 2E 02 C4 83 00 4C C3 DC 9A 00 6A 00 14 DD -- 069E20
00 04 C8 57 56 CB 5E 5F C9 9B 00 01 05 C7 A4 E2 -- 069E30
74 04 FC 7E 83 FC 46 89 05 8B A4 50 3E C5 2E 00 -- 069E40
FC 7E 83 3F 75 02 FC 7E 83 06 74 03 FC 7E 83 0C -- 069E50
7E 8B 18 7D 04 FE 7E 83 00 00 FE 46 C7 5C 75 04 -- 069E60
00 05 C7 A4 E8 1E 8E 2E A4 E6 3E 03 2E E7 D1 FE -- 069E70
00 14 EE A2 9A 00 14 E7 1A 9A E2 EB FE 46 FF 00 -- 069E80
70 3E C5 2E 23 EB 00 14 DA A9 9A 00 54 38 28 9A -- 069E90
36 FF 2E 35 FF A4 74 3E C5 2E 35 FF 02 75 FF A4 -- 069EA0
6A 0A C4 83 00 44 87 60 9A A4 A8 36 FF 2E A4 AA -- 069EB0
05 C7 A4 E2 3E C5 2E 02 C4 83 00 4C C3 DC 9A 03 -- 069EC0
50 3E C5 2E 00 00 04 C8 57 56 CB 5E 5F C9 00 01 -- 069ED0
03 FC 7E 83 0C 74 04 FC 7E 83 FC 46 89 05 8B A4 -- 069EE0
7E 83 06 74 03 FC 7E 83 2F 75 02 FC 7E 83 06 74 -- 069EF0
8B 3B 7D 04 FE 7E 83 00 00 FE 46 C7 46 75 02 FC -- 069F00
05 C7 A4 E8 1E 8E 2E A4 E6 3E 03 2E E7 D1 FE 7E -- 069F10
FF 02 75 FF A4 70 3E C5 2E E2 EB FE 46 FF 00 00 -- 069F20
36 FF 2E A4 AA 36 FF 2E 35 FF A4 74 3E C5 2E 35 -- 069F30
4C C3 DC 9A 04 6A 0A C4 83 00 44 87 60 9A A4 A8 -- 069F40
28 9A 00 14 EE A2 9A 00 14 E7 1A 9A 02 C4 83 00 -- 069F50
01 05 C7 A4 E2 3E C5 2E 00 14 DA A9 9A 00 54 38 -- 069F60
A4 50 3E C5 2E 00 00 04 C8 57 56 CB 5E 5F C9 00 -- 069F70
74 03 FC 7E 83 0C 74 04 FC 7E 83 FC 46 89 05 8B -- 069F80
FE 46 C7 5D 75 04 FC 7E 83 40 75 02 FC 7E 83 06 -- 069F90
3E 03 2E E7 D1 FE 7E 8B 52 7D 04 FE 7E 83 00 00 -- 069FA0
E6 36 03 2E E6 D1 FE 76 8B A4 E8 1E 8E 2E A4 E6 -- 069FB0
A4 DC 3E F7 2E 99 64 04 6B 26 A4 E8 06 8E 2E A4 -- 069FC0
```

```
FF  02  75  FF  A4  70  3E  C5  2E  CB  EB  FE  46  FF  05  89  --  069FD0
36  FF  2E  A4  AA  36  FF  2E  35  FF  A4  74  3E  C5  2E  35  --  069FE0
4C  C3  DC  9A  02  6A  0A  C4  83  00  44  87  60  9A  A4  A8  --  069FF0
C9  00  01  05  C7  A4  E2  3E  C5  2E  02  C4  83  00  01  FE  --  06A000
02  75  FF  A4  68  3E  C5  2E  EC  8B  55  57  56  CB  5E  5F  --  06A010
FF  2E  A4  9A  36  FF  2E  35  FF  A4  6C  3E  C5  2E  35  FF  --  06A020
A4  50  3E  C5  2E  0A  C4  83  00  44  87  60  9A  A4  98  36  --  06A030
C5  2E  18  74  00  3D  83  A4  EA  3E  C5  2E  00  01  05  C7  --  06A040
4C  C3  DC  9A  01  6A  0C  75  00  01  3D  05  8B  A4  EE  3E  --  06A050
A4  E2  3E  C5  2E  00  54  34  15  9A  05  EB  02  C4  83  00  --  06A060
3E  C5  2E  EC  8B  55  57  56  CB  5E  5F  C9  00  00  05  C7  --  06A070

0A  74  00  3D  83  A4  F2  3E  C5  2E  00  09  05  C7  A4  50  --  06A080
83  A4  EA  3E  C5  2E  02  C4  83  00  4C  CC  63  9A  00  6A  --  06A090
0A  75  00  01  3D  05  8B  A4  EE  3E  C5  2E  16  74  00  3D  --  06A0A0
57  56  CB  5E  5F  C9  02  C4  83  00  4C  C3  DC  9A  09  6A  --  06A0B0
0A  7E  C5  70  75  00  3D  83  A4  F6  3E  C5  2E  EC  8B  55  --  06A0C0
05  C7  52  74  00  3D  83  A4  EE  3E  C5  2E  00  02  05  C7  --  06A0D0
FE  3E  C5  2E  A5  02  36  FF  2E  A5  04  36  FF  2E  00  00  --  06A0E0
9A  01  2D  68  02  6A  35  FF  A4  FA  3E  C5  2E  35  FF  A4  --  06A0F0
74  00  3D  83  A5  02  3E  C5  2E  0C  C4  83  00  64  3D  BA  --  06A100
00  64  28  52  9A  35  FF  00  6A  00  6A  00  6A  00  6A  15  --  06A110
02  C4  83  00  44  D1  01  9A  00  6A  00  91  E9  0A  C4  83  --  06A120
3E  C5  2E  DE  EB  D4  04  68  00  6A  00  6A  00  6A  00  6A  --  06A130
FF  2E  35  FF  A4  7C  3E  C5  2E  35  FF  02  75  FF  A4  78  --  06A140
0A  C4  83  00  44  87  60  9A  A4  B0  36  FF  2E  A4  B2  36  --  06A150
A6  36  FF  2E  A4  A0  36  FF  2E  A4  A2  36  FF  2E  57  56  --  06A160
6A  5E  5F  00  5C  FE  EC  9A  04  6A  A4  A4  36  FF  2E  A4  --  06A170
A4  BA  36  FF  2E  A4  B4  36  FF  2E  A4  B6  36  FF  2E  08  --  06A180
9A  05  6A  0A  C4  83  00  5C  ED  6E  9A  A4  B8  36  FF  2E  --  06A190
C5  2E  00  01  05  C7  0A  7E  C5  02  C4  83  00  4C  C3  DC  --  06A1A0
EC  8B  55  57  56  CB  5E  5F  C9  00  01  05  C7  A4  E2  3E  --  06A1B0
02  05  C7  0A  7E  C5  70  75  00  3D  83  A4  F6  3E  C5  2E  --  06A1C0
2E  00  00  05  C7  52  74  00  3D  83  A4  EE  3E  C5  2E  00  --  06A1D0
35  FF  A4  FE  3E  C5  2E  A5  02  36  FF  2E  A5  04  36  FF  --  06A1E0
64  3D  BA  9A  01  2D  68  02  6A  35  FF  A4  FA  3E  C5  2E  --  06A1F0
15  74  00  3D  83  A5  02  3E  C5  2E  0C  C4  83  00  01  FE  --  06A200
83  00  64  28  52  9A  35  FF  00  6A  00  6A  00  6A  00  6A  --  06A210
6A  02  C4  83  00  44  D1  01  9A  00  6A  00  91  E9  0A  C4  --  06A220
80  3E  C5  2E  DE  EB  D4  04  68  00  6A  00  6A  00  6A  00  --  06A230
36  FF  2E  35  FF  A4  84  3E  C5  2E  35  FF  02  75  FF  A4  --  06A240
6A  0A  C4  83  00  44  87  60  9A  A4  C0  36  FF  2E  A4  C2  --  06A250
A4  CA  36  FF  2E  A4  C4  36  FF  2E  A4  C6  36  FF  2E  08  --  06A260
2E  57  56  0A  C4  83  00  5C  ED  6E  9A  A4  C8  36  FF  2E  --  06A270
FF  2E  A4  A6  36  FF  2E  A4  A0  36  FF  2E  A4  A2  36  FF  --  06A280
DC  9A  06  6A  5E  5F  00  5C  FE  EC  9A  04  6A  A4  A4  36  --  06A290
3E  C5  2E  00  01  05  C7  0A  7E  C5  02  C4  83  00  4C  C3  --  06A2A0
00  00  08  C8  57  56  CB  5E  5F  C9  00  01  05  C7  A4  E2  --  06A2B0
2E  A5  08  36  FF  2E  A5  0A  36  FF  2E  A5  0C  36  FF  2E  --  06A2C0
16  75  C0  0B  08  C4  83  00  54  3B  B1  9A  A5  06  36  FF  --  06A2D0
00  64  28  52  9A  12  89  68  00  6A  00  6A  00  6A  00  6A  --  06A2E0
35  FF  02  75  FF  A4  68  3E  C5  2E  00  EF  E9  0A  C4  83  --  06A2F0
98  36  FF  2E  A4  9A  36  FF  2E  35  FF  A4  6C  3E  C5  2E  --  06A300
05  C7  A4  50  3E  C5  2E  0A  C4  83  00  44  87  60  9A  A4  --  06A310
F8  46  8D  16  A5  02  36  FF  2E  A5  04  36  FF  2E  00  15  --  06A320
3B  68  05  6A  35  FF  A4  FA  3E  C5  2E  01  6A  00  6A  50  --  06A330
A5  14  36  FF  2E  06  6A  12  C4  83  00  64  3D  BA  9A  01  --  06A340
9A  A5  0E  36  FF  2E  A5  10  36  FF  2E  A5  12  36  FF  2E  --  06A350
05  89  A5  1A  3E  C5  2E  C0  2B  0A  C4  83  00  5C  ED  6E  --  06A360
00  00  05  C7  A5  12  3E  C5  2E  05  89  A5  16  3E  C5  2E  --  06A370
```

471

```
02 6A 00 00 05 C7 0E 74 00 3D 83 A5 1E 3E C5 2E -- 06A380
2E A4 A2 36 FF 2E 57 56 02 C4 83 00 4C 27 B3 9A -- 06A390
04 6A A4 A4 36 FF 2E A4 A6 36 FF 2E A4 A0 36 FF -- 06A3A0
00 01 05 C7 A5 22 3E C5 2E 5E 5F 00 5C FE EC 9A -- 06A3B0
C7 A5 26 3E C5 2E 02 C4 83 00 4C C3 DC 9A 15 6A -- 06A3C0
EA 3E C5 2E 00 01 05 C7 A4 E2 3E C5 2E 00 01 05 -- 06A3D0
C5 2E EC 8B 55 57 56 CB 5E 5F C9 00 01 05 C7 A4 -- 06A3E0
74 00 3D 83 A4 F2 3E C5 2E 00 16 05 C7 A4 50 3E -- 06A3F0
9A 16 6A 02 C4 83 00 4C CC 63 9A 00 6A 0A 01 FE -- 06A400
00 08 C8 57 56 CB 5E 5F C9 02 C4 83 00 4C C3 DC -- 06A410

50 F8 46 8D 16 A5 02 36 FF 2E A5 04 36 FF 2E 00 -- 06A420
01 3B 68 05 6A 35 FF A4 FA 3E C5 2E 00 6A 00 6A -- 06A430
3E C5 2E 00 54 34 15 9A 12 C4 83 00 64 3D BA 9A -- 06A440
C9 00 00 05 C7 A4 E2 3E C5 2E 00 00 05 C7 A5 22 -- 06A450
3D 80 A5 2A 3E C5 2E 00 00 12 C8 57 56 CB 5E 5F -- 06A460
00 6A 00 6A 00 6A 00 02 05 C7 0A 7E C5 15 74 00 -- 06A470
2E A5 30 36 FF 2E 08 6A 04 18 E9 D4 2F 68 00 6A -- 06A480
C4 83 00 5C ED 6E 9A 50 F0 46 8D 16 A5 2E 36 FF -- 06A490
A5 30 36 FF 2E A5 02 36 FF 2E A5 04 36 FF 2E 0A -- 06A4A0
31 68 03 6A 35 FF A4 FA 3E C5 2E A5 2E 36 FF 2E -- 06A4B0
3D 83 A5 32 3E C5 2E 0E C4 83 00 64 3D BA 9A 01 -- 06A4C0
2E 28 74 61 03 3D 05 8B A5 02 3E C5 2E 5F 75 00 -- 06A4D0
3D 83 A5 36 3E C5 2E 0A 75 00 3D 83 A5 2E 3E C5 -- 06A4E0
3E C5 2E 15 75 00 3D 83 A5 3A 3E C5 2E 14 74 00 -- 06A4F0
00 00 05 C7 A5 32 3E C5 2E 0B 75 00 3D 83 A5 3E -- 06A500
00 6A 00 6A 0D 74 00 3D 83 A5 02 3E C5 2E 20 EB -- 06A510
05 C7 A5 32 3E C5 2E 03 77 E9 35 FF 00 6A 00 6A -- 06A520
C5 2E 50 75 00 01 3D 05 8B A5 32 3E C5 2E 00 01 -- 06A530
8B A5 2E 3E C5 2E 44 75 00 01 3D 05 8B A5 42 3E -- 06A540
A5 3A 3E C5 2E 05 89 F0 46 8B 05 7E F0 46 3B 05 -- 06A550
36 3E C5 2E 05 89 F4 46 8B 05 7E F4 46 3B 05 8B -- 06A560
3E C5 2E 05 89 F2 46 8B 05 7D F2 46 3B 05 8B A5 -- 06A570
C5 2E 05 89 F6 46 8B 05 7D F6 46 3B 05 8B A5 3E -- 06A580
3D 05 8B A5 46 3E C5 2E 28 75 00 3D 83 A5 32 3E -- 06A590
FF 2E 50 F0 46 8D 16 08 6A 02 DA E9 03 74 00 01 -- 06A5A0
0A C4 83 00 5C ED 6E 9A A5 2E 36 FF 2E A5 30 36 -- 06A5B0
46 3E C5 2E 00 01 B8 00 00 05 C7 A5 32 3E C5 2E -- 06A5C0
01 05 C7 0A 7E C5 05 89 A5 42 3E C5 2E 05 89 A5 -- 06A5D0
01 59 E9 03 74 00 15 3D 05 8B A4 50 3E C5 2E 00 -- 06A5E0
FF A4 FE 3E C5 2E A5 02 36 FF 2E A5 04 36 FF 2E -- 06A5F0
9A 01 2D 68 02 6A 35 FF A4 FA 3E C5 2E 35 01 FE -- 06A600
74 00 3D 83 A5 02 3E C5 2E 0C C4 83 00 64 3D BA -- 06A610
05 C7 73 75 00 3D 83 A5 4E 3E C5 2E FE FA E9 03 -- 06A620
64 2A 68 9A A5 52 36 FF 2E A5 54 36 FF 2E 00 01 -- 06A630
FF 2E A5 02 36 FF 2E A5 04 36 FF 2E 04 C4 83 00 -- 06A640
36 FF 2E A5 0C 36 FF 2E A5 52 36 FF 2E A5 54 36 -- 06A650
AC 9A 01 6A A5 2A 36 FF 2E A5 2C 36 FF 2E A5 0A -- 06A660
03 74 00 3D 83 A5 02 3E C5 2E 12 C4 83 00 44 D2 -- 06A670
2E A5 0A 36 FF 2E A5 0C 36 FF 2E 24 6A FE 9B E9 -- 06A680
C4 83 00 5C ED 6E 9A A5 56 36 FF 2E A5 58 36 FF -- 06A690
A5 0C 36 FF 2E A5 02 36 FF 2E A5 04 36 FF 2E 0A -- 06A6A0
2E 0A C4 83 00 44 DE C0 9A 01 6A A5 0A 36 FF 2E -- 06A6B0
5A 3E C5 2E FE 52 E9 03 74 00 3D 83 A5 02 3E C5 -- 06A6C0
A5 02 36 FF 2E A5 04 36 FF 2E 38 74 00 3D 83 A5 -- 06A6D0
FF 2E A5 62 36 FF 2E A5 64 36 FF 2E 00 6A 00 6A -- 06A6E0
36 FF 2E A5 2C 36 FF 2E A5 5E 36 FF 2E A5 60 36 -- 06A6F0
7E 9A 3D EB 16 C4 83 00 44 D8 B4 9A 01 6A A5 2A -- 06A700
6A 3E C5 2E 00 01 05 C7 A5 66 3E C5 2E 00 34 D9 -- 06A710
9A 00 6A 00 6A 04 05 C6 EE 46 89 E4 2A 05 8A A5 -- 06A720
```

```
2E EE 46 8B 00 54 C8 1C 9A 04 C4 83 00 44 5A 4B -- 06A730
A5 1E 3E C5 2E 00 34 DA 22 9A 05 88 A5 6A 3E C5 -- 06A740
C5 2E 05 89 A5 6E 3E C5 2E 05 8B 1C 74 00 3D 83 -- 06A750
C4 83 00 4C 27 B3 9A 02 6A 00 00 05 C7 A5 1E 3E -- 06A760
36 FF 2E A4 50 36 FF 2E A4 52 36 FF 2E 14 6A 02 -- 06A770
6A 0A C4 83 00 5C ED 6E 9A A4 5C 36 FF 2E A4 5E -- 06A780
A5 10 36 FF 2E A5 12 36 FF 2E A5 14 36 FF 2E 06 -- 06A790
36 FF 2E 0A C4 83 00 5C ED 6E 9A A5 0E 36 FF 2E -- 06A7A0
01 6A 00 6A 50 F8 46 8D 16 A5 02 36 FF 2E A5 04 -- 06A7B0

64 3D BA 9A 01 3B 68 05 6A 35 FF A4 FA 3E C5 2E -- 06A7C0
2E 57 56 00 01 05 C7 A4 50 3E C5 2E 12 C4 83 00 -- 06A7D0
00 02 9A 08 6A 00 6A A4 E6 36 FF 2E A4 E8 36 FF -- 06A7E0
3E C5 2E 05 89 A5 1A 3E C5 2E C0 2B 5E 5F 00 8C -- 06A7F0
2E 00 00 05 C7 A5 12 3E C5 2E 05 89 A5 16 01 FE -- 06A800
38 75 00 05 3D 05 74 00 06 3D 05 8B A4 5C 3E C5 -- 06A810
2E A4 56 36 FF 2E A4 58 36 FF 2E A4 5A 36 FF 2E -- 06A820
A5 76 3E C5 2E 35 FF A4 F2 3E C5 2E A4 54 36 FF -- 06A830
35 FF A4 50 3E C5 2E 35 FF A5 72 3E C5 2E 35 FF -- 06A840
3D 05 8B A4 5C 3E C5 2E 10 C4 83 00 4C BA 10 9A -- 06A850
C3 DC 9A 14 6A 41 EB 00 00 00 00 9A 07 75 00 0A -- 06A860
C7 A4 E2 3E C5 2E 00 54 34 15 9A 02 C4 83 00 4C -- 06A870
E9 03 74 00 3D 83 A5 4A 3E C5 2E 27 EB 00 01 05 -- 06A880
6A 00 6A 00 6A 00 6A 00 02 05 C7 0A 7E C5 FD 32 -- 06A890
CB 5E 5F C9 0A C4 83 00 64 28 52 9A D4 05 68 00 -- 06A8A0
3E C5 2E 05 8B A4 F2 3E C5 2E 00 00 0C C8 57 56 -- 06A8B0
A5 7E 3E C5 2E 05 8B A5 72 3E C5 2E 05 89 A5 7A -- 06A8C0
05 89 A5 82 3E C5 2E 05 8B A5 76 3E C5 2E 05 89 -- 06A8D0
05 88 A5 86 3E C5 2E E4 2A 05 8A A5 8A 3E C5 2E -- 06A8E0
88 A5 86 3E C5 2E E4 2A 01 45 8A A5 8A 3E C5 2E -- 06A8F0
86 3E C5 2E E4 2A 02 45 8A A5 8A 3E C5 2E 01 45 -- 06A900
C5 2E E4 2A 03 45 8A A5 8A 3E C5 2E 02 45 88 A5 -- 06A910
36 FF 2E A4 5E 36 FF 2E 14 6A 03 45 88 A5 86 3E -- 06A920
5C ED 6E 9A A4 50 36 FF 2E A4 52 36 FF 2E A4 5C -- 06A930
A5 0E 36 FF 2E A5 10 36 FF 2E 06 6A 0A C4 83 00 -- 06A940
83 00 5C ED 6E 9A A5 12 36 FF 2E A5 14 36 FF 2E -- 06A950
09 F6 7E 83 F6 46 89 05 8B A4 50 3E C5 2E 0A C4 -- 06A960
00 3D 83 A4 F2 3E C5 2E 14 75 16 F6 7E 83 06 74 -- 06A970
50 3E C5 2E 02 C4 83 00 4C CC 63 9A 00 6A 0A 74 -- 06A980
A5 04 36 FF 2E 00 CF E9 03 74 00 15 3D 05 8B A4 -- 06A990
FA 3E C5 2E 35 FF A4 FE 3E C5 2E A5 02 36 FF 2E -- 06A9A0
0C C4 83 00 64 3D BA 9A 01 2D 68 02 6A 35 FF A4 -- 06A9B0
00 6A 00 6A 00 6A 15 74 00 3D 83 A5 02 3E C5 2E -- 06A9C0
2E 01 86 E9 0A C4 83 00 64 28 52 9A 35 FF 00 6A -- 06A9D0
50 F4 46 89 00 01 B8 A5 02 36 FF 2E A5 04 36 FF -- 06A9E0
00 3D 83 A5 02 3E C5 2E 06 C4 83 00 4C 31 62 9A -- 06A9F0
52 9A 35 FF 00 6A 00 6A 00 6A 00 6A 12 74 01 FE -- 06AA00
3C 74 00 3D 83 A5 4E 3E C5 2E 0A C4 83 00 64 28 -- 06AA10
2E A5 08 36 FF 2E A5 02 36 FF 2E A5 04 36 FF 2E -- 06AA20
FF 2E A5 56 36 FF 2E A5 58 36 FF 2E A5 06 36 FF -- 06AA30
36 FF 2E A5 2C 36 FF 2E A5 52 36 FF 2E A5 54 36 -- 06AA40
00 6A 00 6A 16 C4 83 00 44 D8 B4 9A 01 6A A5 2A -- 06AA50
04 36 FF 2E FF 68 E9 A5 02 3E C5 2E 00 6A 00 6A -- 06AA60
2E 00 6A 00 6A 50 F8 46 8D 16 A5 02 36 FF 2E A5 -- 06AA70
00 64 3D BA 9A 01 3B 68 05 6A 35 FF A4 FA 3E C5 -- 06AA80
3E C5 2E 15 74 00 3D 83 A5 6E 3E C5 2E 12 C4 83 -- 06AA90
33 1D 9A 00 00 05 C7 A5 6E 3E C5 2E 05 FF A5 1E -- 06AAA0
7E 83 18 74 04 F6 7E 83 1E 74 03 F6 7E 83 00 54 -- 06AAB0
06 74 08 F6 7E 83 0C 74 16 F6 7E 83 12 74 09 F6 -- 06AAC0
2E 00 01 05 C7 A5 8E 3E C5 2E 09 75 06 F6 7E 83 -- 06AAD0
```

```
47 75 00 06 3D 05 74 00 05 3D 05 8B A4 50 3E C5 -- 06AAE0
2E A4 56 36 FF 2E A4 58 36 FF 2E A4 5A 36 FF 2E -- 06AAF0
A5 76 3E C5 2E 35 FF A4 F2 3E C5 2E A4 54 36 FF -- 06AB00
35 FF A4 50 3E C5 2E 35 FF A5 72 3E C5 2E 35 FF -- 06AB10
9A 35 FF A4 50 3E C5 2E 10 C4 83 00 4C BA 10 9A -- 06AB20
0A 3D 05 8B A4 50 3E C5 2E 02 C4 83 00 44 87 9D -- 06AB30
FF A4 50 3E C5 2E 1D EB 00 00 00 00 9A 07 75 00 -- 06AB40
C5 2E 00 54 34 15 9A 02 C4 83 00 4C C3 DC 9A 35 -- 06AB50

EC 8B 55 57 56 CB 5E 5F C9 00 01 05 C7 A4 E2 3E -- 06AB60
5F C9 00 01 05 C7 04 75 00 3D 83 A5 12 3E C5 2E -- 06AB70
01 3D 05 8B A5 12 3E C5 2E EC 8B 55 57 56 CB 5E -- 06AB80
EC 8B 55 57 56 CB 5E 5F C9 00 00 05 C7 04 75 00 -- 06AB90
75 00 09 3D 05 74 00 01 3D 05 8B A5 92 3E C5 2E -- 06ABA0
A4 FE 3E C5 2E A5 02 36 FF 2E A5 04 36 FF 2E 41 -- 06ABB0
BA 9A 01 2D 68 02 6A 35 FF A4 FA 3E C5 2E 35 FF -- 06ABC0
12 74 00 3D 83 A5 02 3E C5 2E 0C C4 83 00 64 3D -- 06ABD0
83 00 64 28 52 9A 35 FF 00 6A 00 6A 00 6A 00 6A -- 06ABE0
A5 96 3E C5 2E EC 8B 55 57 56 CB 5E 5F C9 0A C4 -- 06ABF0
FF FF 3D 05 8B A5 92 3E C5 2E 00 01 05 C7 01 FE -- 06AC00
01 9A 00 6A 13 74 00 3D 83 A4 EE 3E C5 2E 2C 74 -- 06AC10
2E 00 00 05 C7 A4 EE 3E C5 2E 02 C4 83 00 44 D1 -- 06AC20
5F C9 02 C4 83 00 4C C3 DC 9A 35 FF A5 92 3E C5 -- 06AC30
75 01 3D 80 A5 9A 3E C5 2E EC 8B 55 57 56 CB 5E -- 06AC40
00 14 3D 14 74 00 01 3D 05 8B A5 92 3E C5 2E 66 -- 06AC50
75 00 09 3D 05 74 00 15 3D 0A 74 00 16 3D 0F 74 -- 06AC60
A5 04 36 FF 2E 3C 75 00 3D 83 A5 9E 3E C5 2E 46 -- 06AC70
02 6A 35 FF A4 FA 3E C5 2E 01 6A A5 02 36 FF 2E -- 06AC80
A5 02 3E C5 2E 0C C4 83 00 64 3D BA 9A 01 39 68 -- 06AC90
9A 35 FF 00 6A 00 6A 00 6A 00 6A 12 74 00 3D 83 -- 06ACA0
EC 8B 55 57 56 CB 5E 5F C9 0A C4 83 00 64 28 52 -- 06ACB0
8B A5 92 3E C5 2E 66 75 01 3D 80 A5 9A 3E C5 2E -- 06ACC0
50 75 00 15 3D 05 74 00 14 3D 0A 74 00 01 3D 05 -- 06ACD0
2E 00 44 98 EF 9A 46 75 00 3D 83 A5 9E 3E C5 2E -- 06ACE0
35 FF A4 FE 3E C5 2E A5 02 36 FF 2E A5 04 36 FF -- C6ACF0
64 3D BA 9A 01 2C 68 02 6A 35 FF A4 FA 3E C5 2E -- 06AD00
00 6A 12 74 00 3D 83 A5 02 3E C5 2E 0C C4 83 00 -- 06AD10
0A C4 83 00 64 28 52 9A 35 FF 00 6A 00 6A 00 6A -- 06AD20
01 05 C7 0A 7E C5 00 00 2E C8 57 56 CB 5E 5F C9 -- 06AD30
46 8B 04 C4 83 00 5C E0 79 9A 50 D8 46 8D 16 00 -- 06AD40
C7 A5 22 3E C5 2E D4 46 89 DA 46 8B D6 46 89 D8 -- 06AD50
76 FF 50 A5 06 36 FF 2E A5 08 36 FF 2E 00 00 05 -- 06AD60
00 9A E9 03 75 C0 0B 08 C4 83 00 54 32 B4 9A D6 -- 06AD70
02 6A 00 00 05 C7 0E 74 00 3D 83 A5 1E 3E C5 2E -- 06AD80
2E A4 A2 36 FF 2E 57 56 02 C4 83 00 4C 27 B3 9A -- 06AD90
04 6A A4 A4 36 FF 2E A4 A6 36 FF 2E A4 A0 36 FF -- 06ADA0
89 A5 B2 3E C5 2E D8 46 8B 5E 5F 00 5C FE EC 9A -- 06ADB0
8B 05 89 A5 AE 3E C5 2E 05 89 A5 16 3E C5 2E 05 -- 06ADC0
05 89 A5 1A 3E C5 2E 05 89 A5 BA 3E C5 2E DA 46 -- 06ADD0
A5 BE 3E C5 2E E8 46 D9 9B 05 89 A5 B6 3E C5 2E -- 06ADE0
2E 1D D9 9B A5 C2 3E C5 2E EC 46 D9 9B 1D D9 9B -- 06ADF0
A5 C6 3E C5 2E 09 75 00 3D 83 A5 12 3E C5 01 FE -- 06AE00
A2 3E C5 2E 00 C2 E9 00 44 9C C9 9A 00 01 05 C7 -- 06AE10
FF 2E A5 0C 36 FF 2E 00 9B E9 03 75 00 3D 83 A5 -- 06AE20
C4 83 00 54 32 B4 9A D6 76 FF D4 76 FF A5 0A 36 -- 06AE30
C5 A5 A6 3E C5 2E A5 AA 36 C4 2E 7F 74 C0 0B 08 -- 06AE40
0D 75 00 D2 7E 83 D2 46 89 04 23 26 02 45 8B 3D -- 06AE50
3E C5 2E 62 EB 12 8D 68 00 6A 00 6A 00 6A 00 6A -- 06AE60
C5 2E A5 AA 36 C4 2E 1B 74 05 3B D2 46 8B A5 AA -- 06AE70
54 3C 5F 9A 50 04 23 26 02 45 8B 3D C5 A5 A6 3E -- 06AE80
```

474

```
3E C5 2E 00 01 05 C7 A5 22 3E C5 2E 02 C4 83 00 -- 06AE90
00 44 1A 49 9A 50 D8 46 8D 16 00 01 05 C7 A5 26 -- 06AEA0
01 05 C7 A5 1E 3E C5 2E 00 54 33 1D 9A 04 C4 83 -- 06AEB0
9A 12 85 68 00 6A 00 6A 00 6A 00 6A FE F5 E9 00 -- 06AEC0
C9 9B 00 02 05 C7 0A 7E C5 0A C4 83 00 64 28 52 -- 06AED0
FF 2E A5 04 36 FF 2E 00 00 06 C8 57 56 CB 5E 5F -- 06AEE0
6A 35 FF A4 FA 3E C5 2E 50 FA 46 8D 16 A5 02 36 -- 06AEF0

00 FE 7E 83 0E C4 83 00 64 3D BA 9A 01 3A 68 03 -- 06AF00
C5 2E 05 89 A5 B2 3E C5 2E E0 D1 FA 46 8B 34 74 -- 06AF10
D1 FC 46 8B 05 89 A5 AE 3E C5 2E 05 89 A5 16 3E -- 06AF20
2E 05 89 A5 1A 3E C5 2E 05 89 A5 BA 3E C5 2E E0 -- 06AF30
3E C5 2E 05 8B A5 AE 3E C5 2E 28 EB A5 B6 3E C5 -- 06AF40
A5 B6 3E C5 2E 05 89 A5 16 3E C5 2E 05 89 A5 B2 -- 06AF50
05 89 A5 1A 3E C5 2E 05 89 A5 BA 3E C5 2E 05 8B -- 06AF60
C5 2E EC 8B 55 57 56 CB 5E 5F C9 00 44 9C C9 9A -- 06AF70
00 00 05 C7 A5 9E 3E C5 2E 00 00 05 C7 A5 92 3E -- 06AF80
C7 A5 9E 3E C5 2E 1B 75 00 3D 83 A5 12 3E C5 2E -- 06AF90
EA 3E C5 2E 00 01 05 C7 A5 12 3E C5 2E 00 01 05 -- 06AFA0
4C C3 DC 9A 35 FF A4 50 3E C5 2E 00 00 05 C7 A4 -- 06AFB0
29 75 00 01 3D 05 8B A5 9E 3E C5 2E 02 C4 83 00 -- 06AFC0
FA 3E C5 2E 01 6A A5 02 36 FF 2E A5 04 36 FF 2E -- 06AFD0
0C C4 83 00 64 3D BA 9A 01 39 68 02 6A 35 FF A4 -- 06AFE0
05 C7 A4 E2 3E C5 2E 00 00 05 C7 A5 12 3E C5 2E -- 06AFF0
7E C5 00 00 28 C8 57 56 CB 5E 5F C9 00 01 01 FE -- 06B000
83 00 5C E0 79 9A 50 D8 46 8D 16 00 01 05 C7 0A -- 06B010
36 FF 2E 06 6A 00 00 05 C7 A5 9E 3E C5 2E 04 C4 -- 06B020
12 36 FF 2E A5 14 36 FF 2E A5 CA 36 FF 2E A5 CC -- 06B030
FF 2E A5 08 36 FF 2E 0A C4 83 00 5C ED 6E 9A A5 -- 06B040
C4 83 00 54 32 B4 9A D8 76 FF DA 76 FF A5 06 36 -- 06B050
12 86 68 00 6A 00 6A 00 6A 00 6A 1C 75 C0 0B 08 -- 06B060
EB 00 02 05 C7 0A 7E C5 0A C4 83 00 64 28 52 9A -- 06B070
16 3E C5 2E 04 2B 26 D8 46 8B A5 16 36 C4 2E 4E -- 06B080
C5 2E 04 2B 26 DA 46 8B A5 1A 36 C4 2E 05 89 A5 -- 06B090
C5 2E 00 00 05 C7 A5 92 3E C5 2E 05 89 A5 1A 3E -- 06B0A0
00 01 05 C7 A4 EA 3E C5 2E 00 00 05 C7 A5 C6 3E -- 06B0B0
C9 02 C4 83 00 4C C3 DC 9A 35 FF A4 50 3E C5 2E -- 06B0C0
05 8B A4 50 3E C5 2E 00 00 04 C8 57 56 CB 5E 5F -- 06B0D0
83 09 74 14 FC 7E 83 0F 74 01 FC 7E 83 FC 46 89 -- 06B0E0
8B 05 FF A5 CE 3E C5 2E 00 85 E9 03 74 15 FC 7E -- 06B0F0
81 00 40 FE 46 C7 00 00 05 C7 04 7C 00 08 3D 05 -- 06B100
05 88 A5 D2 3E C5 2E FE 46 8B 67 7D 00 80 FE 7E -- 06B110
DA 06 03 2E 02 E0 C1 05 8B A5 CE 3E C5 2E 03 6A -- 06B120
00 01 05 C3 8B 51 CA 8B 8B A5 DC 16 8B 2E A5 -- 06B130
00 5C ED 6E 9A A5 D6 36 FF 2E A5 D8 36 FF 2E 50 -- 06B140
36 FF 2E A5 02 36 FF 2E A5 04 36 FF 2E 0A C4 83 -- 06B150
01 32 68 06 6A 00 6A 00 6A A5 D2 36 FF 2E A5 D4 -- 06B160
5E 5F C9 92 EB FE 46 FF 10 C4 83 00 64 40 D0 9A -- 06B170
F8 46 8D 16 00 08 F6 46 C7 00 00 0A C8 57 56 CB -- 06B180
98 F8 46 8A 06 C4 83 00 5C D0 03 9A F6 76 FF 50 -- 06B190
30 2D 98 FA 46 8A 05 89 A4 B8 3E C5 2E 00 30 2D -- 06B1A0
2E 00 30 2D 98 FC 46 8A 05 89 A5 DE 3E C5 2E 00 -- 06B1B0
00 05 3D 05 8B A4 B8 3E C5 2E 05 89 A5 E2 3E C5 -- 06B1C0
05 89 A5 E6 3E C5 2E 00 30 2D 98 FE 46 8A 0E 75 -- 06B1D0
00 4C C3 DC 9A 05 6A 00 05 05 C7 A5 92 3E C5 2E -- 06B1E0
04 36 FF 2E EC 8B 55 57 56 CB 5E 5F C9 02 C4 83 -- 06B1F0
2E 35 FF A4 FE 3E C5 2E A5 02 36 FF 2E A5 01 FE -- 06B200
00 64 3D BA 9A 01 2D 68 02 6A 35 FF A4 FA 3E C5 -- 06B210
00 82 E9 03 74 00 3D 83 A5 02 3E C5 2E 0C C4 83 -- 06B220
A5 2E 36 FF 2E A5 30 36 FF 2E 57 A5 04 36 FF 2E -- 06B230
```

```
64 3D BA 9A 01 31 68 03 6A 35 FF A4 FA 3E C5 2E -- 06B240
48 75 00 67 3D 05 8B A5 02 3E C5 2E 0E C4 83 00 -- 06B250
04 36 FF 2E 0E 75 00 3D 83 A5 EA 3E C5 2E 62 EB -- 06B260
2E A5 04 36 FF 2E 0C EB 3D 6A A5 02 36 FF 2E A5 -- 06B270
83 00 64 40 D0 9A 6F 6A 03 6A 03 6A A5 02 36 FF -- 06B280
DC 9A 35 FF 28 74 00 3D 83 A5 02 3E C5 2E 0A C4 -- 06B290

00 3D 83 A5 02 3E C5 2E 1C EB 02 C4 83 00 64 59 -- 06B2A0
64 28 52 9A 35 FF 00 6A 00 6A 00 6A 00 6A B0 74 -- 06B2B0
2E 57 56 EC 8B 55 57 56 CB 5E 5F C9 0A C4 83 00 -- 06B2C0
75 FF A5 F2 3E C5 2E A5 EE 36 FF 2E A5 F0 36 FF -- 06B2D0
00 01 B8 5E 5F 00 5C FE EC 9A 00 E6 68 35 FF 02 -- 06B2E0
88 E4 2A 02 45 88 E4 2A 03 45 88 A5 F6 3E C5 2E -- 06B2F0
75 00 01 05 F7 A5 AA 3E C5 2E 05 88 E4 2A 01 45 -- 06B300
05 C6 A4 A0 3E C5 2E 00 05 C6 A5 F6 3E C5 2E 10 -- 06B310
F6 3E C5 2E 12 75 00 02 05 F7 A5 AA 3E C5 2E 00 -- 06B320
C5 2E 00 01 45 C6 A4 A0 3E C5 2E 00 01 45 C6 A5 -- 06B330
45 C6 A5 F6 3E C5 2E 12 75 00 04 05 F7 A5 AA 3E -- 06B340
A5 AA 3E C5 2E 00 02 45 C6 A4 A0 3E C5 2E 00 02 -- 06B350
2E 00 03 45 C6 A5 F6 3E C5 2E 12 75 00 08 05 F7 -- 06B360
2E A4 A6 36 FF 2E 57 56 00 03 45 C6 A4 A0 3E C5 -- 06B370
04 6A A4 A0 36 FF 2E A4 A2 36 FF 2E A4 A4 36 FF -- 06B380
45 89 A4 94 3E C5 2E C0 2B 5E 5F 00 5C FE EC 9A -- 06B390
A4 9A 36 FF 2E 57 56 05 89 02 45 89 04 45 89 06 -- 06B3A0
6A A4 90 36 FF 2E A4 92 36 FF 2E A4 98 36 FF 2E -- 06B3B0
2E A4 B2 36 FF 2E 57 56 5E 5F 00 5C FE EC 9A 14 -- 06B3C0
14 6A A4 90 36 FF 2E A4 92 36 FF 2E A4 B0 36 FF -- 06B3D0
FF 2E A4 C2 36 FF 2E 57 56 5E 5F 00 5C FE EC 9A -- 06B3E0
9A 14 6A A4 90 36 FF 2E A4 92 36 FF 2E A4 C0 36 -- 06B3F0
2E A4 AA 36 FF 2E 57 56 5E 5F 00 5C FE EC 01 FE -- 06B400
14 6A A4 90 36 FF 2E A4 92 36 FF 2E A4 A8 36 FF -- 06B410
FF 2E A4 D2 36 FF 2E 57 56 5E 5F 00 5C FE EC 9A -- 06B420
9A 14 6A A4 90 36 FF 2E A4 92 36 FF 2E A4 D0 36 -- 06B430
45 89 A4 94 3E C5 2E 00 FF B8 5E 5F 00 5C FE EC -- 06B440
D4 3E C5 2E 00 64 B8 05 89 02 45 89 04 45 89 06 -- 06B450
90 3E C5 2E 05 89 02 45 89 04 45 89 06 45 89 A4 -- 06B460
C5 2E 00 01 05 C7 A4 98 3E C5 2E 00 00 05 C7 A4 -- 06B470
00 06 05 C7 A4 C0 3E C5 2E 00 05 05 C7 A4 B0 3E -- 06B480
05 C7 A4 D0 3E C5 2E 00 03 05 C7 A4 A8 3E C5 2E -- 06B490
A5 FE 3E C5 2E 00 01 05 C7 A5 FA 3E C5 2E 00 07 -- 06B4A0
3E C5 2E 00 00 05 C7 A6 02 3E C5 2E 00 01 05 C7 -- 06B4B0
2E 00 00 05 C7 A6 0A 3E C5 2E 00 00 05 C7 A6 06 -- 06B4C0
0F 05 C7 A6 12 3E C5 2E 00 01 05 C7 A6 0E 3E C5 -- 06B4D0
C7 A6 1A 3E C5 2E 00 0F 05 C7 A6 16 3E C5 2E 00 -- 06B4E0
22 3E C5 2E 00 0C 05 C7 A6 1E 3E C5 2E 00 0F 05 -- 06B4F0
C5 2E 00 0A 05 C7 A6 26 3E C5 2E 00 04 05 C7 A6 -- 06B500
00 32 05 C7 A6 2E 3E C5 2E 00 32 05 C7 A6 2A 3E -- 06B510
05 C7 A6 36 3E C5 2E 00 32 05 C7 A6 32 3E C5 2E -- 06B520
A6 3E 3E C5 2E 00 32 05 C7 A6 3A 3E C5 2E 00 32 -- 06B530
2E C0 2B 00 00 05 C7 A6 42 3E C5 2E 00 64 05 C7 -- 06B540
2E 14 6A 05 89 A6 46 3E C5 2E 05 89 A6 4A 3E C5 -- 06B550
FF 2E A4 52 36 FF 2E A4 90 36 FF 2E A4 92 36 FF -- 06B560
A4 62 36 FF 2E 0A C4 83 00 5C ED 6E 9A A4 50 36 -- 06B570
2E A4 64 36 FF 2E A4 66 36 FF 2E A4 60 36 FF 2E -- 06B580
3E C5 2E 35 FF A6 2A 3E C5 2E 35 FF A5 FA 3E C5 -- 06B590
00 4C BA 10 9A 35 FF A4 90 3E C5 2E 35 FF A6 12 -- 06B5A0
36 FF 2E A4 68 36 FF 2E A4 6A 36 FF 2E 10 C4 83 -- 06B5B0
C5 2E 35 FF A5 FE 3E C5 2E A4 6C 36 FF 2E A4 6E -- 06B5C0
98 3E C5 2E 35 FF A6 1E 3E C5 2E 35 FF A6 36 3E -- 06B5D0
A4 7A 36 FF 2E 10 C4 83 00 4C BA 10 9A 35 FF A4 -- 06B5E0
```

```
2E  A4  7C  36  FF  2E  A4  7E  36  FF  2E  A4  78  36  FF  2E  --  06B5F0
2E  35  FF  A6  3A  3E  C5  2E  35  FF  A6  02  3E  C5  01  FE  --  06B600
BA  10  9A  35  FF  A4  B0  3E  C5  2E  35  FF  A6  22  3E  C5  --  06B610
2E  A4  70  36  FF  2E  A4  72  36  FF  2E  10  C4  83  00  4C  --  06B620
35  FF  A6  0A  3E  C5  2E  A4  74  36  FF  2E  A4  76  36  FF  --  06B630

C5  2E  35  FF  A6  1A  3E  C5  2E  35  FF  A6  2E  3E  C5  2E  --  06B640
36  FF  2E  10  C4  83  00  4C  BA  10  9A  35  FF  A4  A8  3E  --  06B650
8C  36  FF  2E  A4  8E  36  FF  2E  A4  88  36  FF  2E  A4  8A  --  06B660
2E  35  FF  A6  32  3E  C5  2E  35  FF  A6  0E  3E  C5  2E  A4  --  06B670
BA  10  9A  35  FF  A4  D0  3E  C5  2E  35  FF  A6  16  3E  C5  --  06B680
2E  A4  80  36  FF  2E  A4  82  36  FF  2E  10  C4  83  00  4C  --  06B690
35  FF  A6  06  3E  C5  2E  A4  84  36  FF  2E  A4  86  36  FF  --  06B6A0
C5  2E  35  FF  A6  26  3E  C5  2E  35  FF  A6  3E  3E  C5  2E  --  06B6B0
3E  C5  2E  10  C4  83  00  4C  BA  10  9A  35  FF  A4  C0  3E  --  06B6C0
2E  00  01  05  C7  A6  4E  3E  C5  2E  00  03  05  C7  A4  B4  --  06B6D0
03  05  C7  A4  C4  3E  C5  2E  00  01  05  C7  A6  52  3E  C5  --  06B6E0
C7  A6  5A  3E  C5  2E  00  08  05  C7  A6  56  3E  C5  2E  00  --  06B6F0
00  3C  A6  D0  00  6C  17  62  00  CB  5E  5F  C9  00  01  05  --  06B700
00  3C  A6  D2  00  6C  17  B2  00  6C  17  4E  00  6C  17  AE  --  06B710
00  3C  A6  DA  00  6C  17  C2  00  3C  A6  D4  00  6C  17  B6  --  06B720
00  3C  A6  D8  00  6C  17  BE  00  3C  A6  D6  00  6C  17  BA  --  06B730
00  6C  16  E2  00  6C  16  D6  00  3C  A6  DC  00  6C  17  C6  --  06B740
00  6C  33  64  00  24  F4  C6  00  6C  16  F6  00  6C  16  EA  --  06B750
00  6C  17  8E  00  6C  16  FE  00  6C  17  32  00  6C  17  26  --  06B760
00  6C  17  9E  00  6C  17  12  00  6C  17  0A  00  6C  17  96  --  06B770
00  6C  17  46  00  6C  17  3A  00  6C  17  1E  00  6C  17  A6  --  06B780
17  6E  00  3C  A6  B4  00  24  F4  CB  00  FF  00  24  F4  96  --  06B790
A6  B6  00  6C  17  64  00  3C  A6  B8  00  3C  A6  BA  00  6C  --  06B7A0
AE  C6  00  6C  33  62  00  6C  33  5C  00  3C  F5  A4  00  3C  --  06B7B0
17  7E  00  6C  17  7C  00  6C  17  82  00  3C  93  CA  00  3C  --  06B7C0
A6  CC  00  6C  16  5E  00  3C  A6  CE  00  6C  17  80  00  6C  --  06B7D0
A6  E0  00  3C  A6  E6  00  3C  A6  DE  00  3C  86  A2  00  3C  --  06B7E0
A6  FE  00  3C  A7  00  00  3C  A6  E4  00  3C  A6  E2  00  3C  --  06B7F0
00  6C  23  2E  00  6C  23  2C  00  3C  A6  C2  00  3C  01  FE  --  06B800
00  3C  96  72  00  3C  96  60  00  3C  96  5E  00  6C  23  40  --  06B810
00  6C  17  66  00  6C  33  5A  00  3C  90  71  00  6C  27  C4  --  06B820
00  6C  17  54  00  6C  17  52  00  6C  17  50  00  6C  17  68  --  06B830
00  3C  A6  BC  00  6C  33  58  00  6C  17  6A  00  6C  17  56  --  06B840
00  3C  AE  54  00  3C  A6  BE  00  3C  86  9A  00  6C  16  60  --  06B850
00  6C  17  8A  00  3C  A6  F8  00  3C  A7  08  00  3C  92  D2  --  06B860
00  6C  17  D0  00  6C  17  CC  00  6C  17  8C  00  3C  A6  FA  --  06B870
00  6C  17  D4  00  6C  16  56  00  6C  17  88  00  6C  16  48  --  06B880
00  6C  17  9A  00  6C  17  98  00  6C  16  62  00  6C  17  D5  --  06B890
00  3C  90  82  00  3C  A7  06  00  3C  91  26  00  6C  17  9C  --  06B8A0
00  6C  17  00  00  6C  16  EC  00  6C  16  D8  00  6C  16  DE  --  06B8B0
00  6C  16  DA  00  6C  17  3C  00  6C  17  28  00  6C  17  14  --  06B8C0
00  6C  17  02  00  6C  16  EE  00  6C  17  2A  00  6C  17  3E  --  06B8D0
00  6C  17  40  00  6C  17  2C  00  6C  16  DC  00  6C  17  16  --  06B8E0
00  6C  17  76  00  6C  17  18  00  6C  17  04  00  6C  16  F0  --  06B8F0
00  6C  17  92  00  6C  17  90  00  6C  17  7A  00  6C  17  78  --  06B900
46  C7  00  00  06  C8  57  56  00  6C  17  A2  00  6C  17  A0  --  06B910
44  57  40  9A  00  01  05  C7  C4  A4  3E  C5  2E  00  00  FA  --  06B920
7E  83  04  C4  83  00  64  13  49  9A  50  FA  46  8D  16  00  --  06B930
02  3D  05  8B  C4  A8  3E  C5  2E  04  10  E9  03  74  00  FA  --  06B940
FA  46  89  00  44  AC  04  9A  00  44  C1  C3  9A  05  75  00  --  06B950
75  00  3D  83  C4  AC  3E  C5  2E  03  FB  E9  03  74  C0  0B  --  06B960
C7  00  44  AA  BE  9A  00  01  05  C7  C4  B0  3E  C5  2E  0E  --  06B970
03  C4  B4  3E  C5  2E  12  74  10  FE  7E  83  00  00  FE  46  --  06B980
44  AF  A7  9A  E8  EB  FE  46  FF  05  88  FE  46  8B  FE  7E  --  06B990
```

```
36 FF 2E 50 FA 46 8D 16 02 70 E9 03 75 C0 0B 00 -- 06B9A0
BC 36 FF 2E C4 BE 36 FF 2E C4 B4 36 FF 2E C4 B6 -- 06B9B0
0A 6A 00 6A 04 6A 35 FF C4 B8 3E C5 2E 10 6A C4 -- 06B9C0
74 00 FA 7E 83 18 C4 83 00 64 40 D0 9A 01 43 68 -- 06B9D0

C5 2E 50 74 00 3D 83 C4 C0 3E C5 2E 03 73 E9 03 -- 06B9E0
00 3D 83 C4 C4 3E C5 2E 46 74 00 3D 83 C4 B0 3E -- 06B9F0
FF 2E C4 B6 36 FF 2E 50 FA 46 8D 16 3C 74 01 FE -- 06BA00
2E 10 6A C4 CC 36 FF 2E C4 CE 36 FF 2E C4 B4 36 -- 06BA10
9A 01 43 68 0A 6A 00 6A 05 6A 35 FF C4 C8 3E C5 -- 06BA20
03 19 E9 03 74 00 FA 7E 83 18 C4 83 00 64 40 D0 -- 06BA30
83 00 64 40 D0 9A 03 87 68 02 6A 50 FA 46 8D 16 -- 06BA40
50 FA 46 8D 16 02 FE E9 03 74 00 FA 7E 83 08 C4 -- 06BA50
2E C4 D6 36 FF 2E C4 B4 36 FF 2E C4 B6 36 FF 2E -- 06BA60
6A 04 6A 35 FF C4 D0 3E C5 2E 10 6A C4 D4 36 FF -- 06BA70
7E 83 18 C4 83 00 64 40 D0 9A 01 43 68 0A 6A 00 -- 06BA80
74 00 3D 83 C4 C0 3E C5 2E 02 C2 E9 03 74 00 FA -- 06BA90
50 FA 46 8D 16 3C 74 00 3D 83 C4 B0 3E C5 2E 46 -- 06BAA0
2E C4 DE 36 FF 2E C4 B4 36 FF 2E C4 B6 36 FF 2E -- 06BAB0
6A 04 6A 35 FF C4 D8 3E C5 2E 10 6A C4 DC 36 FF -- 06BAC0
7E 83 18 C4 83 00 64 40 D0 9A 01 43 68 0A 6A 00 -- 06BAD0
D0 3E C5 2E 00 00 FE 46 C7 02 72 E9 03 74 00 FA -- 06BAE0
8A F8 03 C4 D4 3E C5 2E 55 7D 05 3B FE 46 8B C4 -- 06BAF0
03 2E 04 FF 26 3C 8B 26 C4 E0 36 C4 2E E4 2A 05 -- 06BB00
03 C4 D4 3E C5 2E 05 88 C4 E6 1E 8E 2E C4 E4 3E -- 06BB10
FF 26 3C 8B 26 C4 B8 36 C4 2E E4 2A 05 8A FE 7E -- 06BB20
3E C5 2E 05 88 C4 BE 1E 8E 2E C4 BC 3E 03 2E 04 -- 06BB30
FE 46 C7 9F EB FE 46 FF 00 05 C6 FE 7E 03 C4 D4 -- 06BB40
C1 05 8B C4 E8 3E C5 2E 28 7D 04 FE 7E 83 00 00 -- 06BB50
76 FF 50 52 C4 EE 16 8B 2E C4 EC 06 03 2E 07 E0 -- 06BB60
D2 EB FE 46 FF 08 C4 83 00 34 1F 2F 9A 02 6A FE -- 06BB70
C4 E8 3E C5 2E 02 C4 83 00 64 4E 56 9A 08 00 68 -- 06BB80
89 C4 F2 1E 8E 2E C4 F0 3E 03 2E 02 E7 C1 3D 8B -- 06BB90
C7 5B 7D 04 FE 7E 83 00 00 FE 46 C7 02 55 89 05 -- 06BBA0
E6 D1 FC 76 8B 4A 7D 01 00 FC 7E 81 00 00 FC 46 -- 06BBB0
C4 F6 1E 8E 2E C4 F4 3E 03 2E 09 E7 C1 FE 7E 8B -- 06BBC0
C4 E8 1E C5 2E CA 8B E2 D1 FC 56 8B 05 8B FE 03 -- 06BBD0
8B C4 F2 06 8E 2E C4 F0 36 03 2E 02 E6 C1 37 8B -- 06BBE0
05 89 F9 03 02 5C 8E 26 3C 03 26 09 E7 C1 FE 7E -- 06BBF0
B0 3E C5 2E 9F EB FE 46 FF AF EB FC 46 FF 01 FE -- 06BC00
44 AC DA 9A 48 EB 00 00 05 C7 4E 74 00 3D 83 C4 -- 06BC10
05 3B FE 46 8B C4 D0 3E C5 2E 00 00 FE 46 C7 00 -- 06BC20
36 C4 2E E4 2A 05 8A F8 03 C4 D4 3E C5 2E 32 7D -- 06BC30
1E 8E 2E C4 BC 3E 03 2E 04 FF 26 3C 8B 26 C4 B8 -- 06BC40
FF 00 05 C6 FE 7E 03 C4 D4 3E C5 2E 05 88 C4 BE -- 06BC50
8D 16 7E 74 00 3D 83 C4 F8 3E C5 2E C2 EB FE 46 -- 06BC60
36 FF 2E C4 B4 36 FF 2E C4 B6 36 FF 2E 50 FA 46 -- 06BC70
35 FF C4 B8 3E C5 2E 10 6A C4 BC 36 FF 2E C4 BE -- 06BC80
C4 83 00 64 40 D0 9A 01 43 68 0A 6A 00 6A 00 6A -- 06BC90
C7 C4 FC 3E C5 2E 00 B1 E9 03 74 00 FA 7E 83 18 -- 06BCA0
E8 3E C5 2E 00 00 05 C7 C4 D0 3E C5 2E 00 00 05 -- 06BCB0
7C 01 00 FE 7E 81 00 00 FE 46 C7 FF FF 05 C7 C4 -- 06BCC0
00 3E 03 2E E7 D1 FE 46 FF FE 7E 8B 00 92 E9 03 -- 06BCD0
FA 46 8D 16 DE EB 00 01 05 C7 C5 02 1E 8E 2E C5 -- 06BCE0
C4 BE 36 FF 2E C4 B4 36 FF 2E C4 B6 36 FF 2E 50 -- 06BCF0
03 6A 35 FF C4 B8 3E C5 2E 10 6A C4 BC 36 FF 2E -- 06BD00
16 18 C4 83 00 64 40 D0 9A 01 43 68 0A 6A 00 6A -- 06BD10
FF 2E C4 B4 36 FF 2E C4 B6 36 FF 2E 50 FA 46 8D -- 06BD20
FF C4 E0 3E C5 2E 10 6A C4 E4 36 FF 2E C4 E6 36 -- 06BD30
83 00 64 40 D0 9A 01 43 68 0A 6A 00 6A 04 6A 35 -- 06BD40
```

```
F8 9A FA 76 FF FF 4F E9 03 75 00 FA 7E 83 18 C4 -- 06BD50
2E EC 8B 55 57 56 CB 5E 5F C9 02 C4 83 00 2C D0 -- 06BD60
02 C8 57 56 CB 5E 5F C9 00 01 05 C7 C4 B0 3E C5 -- 06BD70

C4 83 00 64 4E 56 9A 35 FF C4 D0 3E C5 2E 00 00 -- 06BD80
00 00 FE 46 C7 02 55 89 05 89 C5 04 3E C5 2E 02 -- 06BD90
D4 3E C5 2E 3F 7D 05 3B FE 46 8B C4 D0 3E C5 2E -- 06BDA0
26 FE 7E 8B C5 04 36 C4 2E E4 2A 05 8A F8 03 C4 -- 06BDB0
FE 7E 03 C4 D4 3E C5 2E 05 88 02 5C 8E 26 3C 03 -- 06BDC0
1E 8E 2E C5 08 3E 03 2E E7 D1 F8 8B E4 2A 05 8A -- 06BDD0
C4 D0 3E C5 2E B5 EB FE 46 FF 00 00 05 C7 C5 0A -- 06BDE0
C7 C4 AC 3E C5 2E 04 45 89 C5 04 3E C5 2E 05 8B -- 06BDF0
16 00 00 02 C8 57 56 CB 5E 5F C9 00 01 05 01 FE -- 06BE00
FF 2E C4 B4 36 FF 2E C4 B6 36 FF 2E 50 FE 46 8D -- 06BE10
FF C4 D8 3E C5 2E 10 6A C4 DC 36 FF 2E C4 DE 36 -- 06BE20
83 00 64 40 D0 9A 01 43 68 0A 6A 00 6A 04 6A 35 -- 06BE30
F8 3E C5 2E 63 74 00 3D 83 C4 C4 3E C5 2E 18 C4 -- 06BE40
C4 B6 36 FF 2E 50 FE 46 8D 16 26 74 00 3D 83 C4 -- 06BE50
6A C4 CC 36 FF 2E C4 CE 36 FF 2E C4 B4 36 FF 2E -- 06BE60
FE 46 8D 16 24 EB 00 6A 35 FF C4 C8 3E C5 2E 10 -- 06BE70
C4 CE 36 FF 2E C4 B4 36 FF 2E C4 B6 36 FF 2E 50 -- 06BE80
04 6A 35 FF C4 C8 3E C5 2E 10 6A C4 CC 36 FF 2E -- 06BE90
83 18 C4 83 00 64 40 D0 9A 01 43 68 0A 6A 00 6A -- 06BEA0
02 C4 83 00 2C D0 F8 9A FE 76 FF 0B 74 00 FE 7E -- 06BEB0
2E 00 00 FC 46 C7 00 00 0C C8 57 56 CB 5E 5F C9 -- 06BEC0
0E 36 FF 2E 50 FC 46 8D 16 06 05 C6 C5 0C 3E C5 -- 06BED0
0E C4 83 00 64 40 D0 9A 6E 6A 05 6A 01 6A 57 C5 -- 06BEE0
C4 83 00 2C D0 F8 9A FC 76 FF 0E 74 00 FC 7E 83 -- 06BEF0
88 E4 2A FA 46 88 C0 2B 02 F8 46 C6 00 91 E9 02 -- 06BF00
7E 83 00 00 FE 46 C7 F4 5E D9 9B EE D9 9B F9 46 -- 06BF10
8D 16 50 F4 46 8D 16 50 FC 46 8D 16 47 7D 04 FE -- 06BF20
8B 2E C5 14 06 03 2E 03 E0 C1 FE 46 8B 50 F8 46 -- 06BF30
C5 10 06 03 2E 03 E0 C1 FE 46 8B 50 52 C5 16 16 -- 06BF40
D0 9A 00 CC 68 0B 6A 01 6A 50 52 C5 12 16 8B 2E -- 06BF50
75 00 FC 7E 83 B3 EB FE 46 FF 1A C4 83 00 64 40 -- 06BF60
FF 2E 50 FC 46 8D 16 16 05 C6 C5 0C 3E C5 2E 21 -- 06BF70
83 00 64 40 D0 9A 6E 6A 05 6A 01 6A 57 C5 0E 36 -- 06BF80
00 00 04 C8 57 56 CB 5E 5F C9 9B FC 46 8B 0E C4 -- 06BF90
E7 C1 3D 8B C4 E8 3E C5 2E 0D FF C5 18 3E C5 2E -- 06BFA0
05 0B 02 45 8B C4 F2 1E 8E 2E C4 F0 3E 03 2E 02 -- 06BFB0
C4 2E 2E 7D 01 00 FE 7E 81 00 00 FE 46 C7 78 75 -- 06BFC0
1E 8E 2E C5 08 3E 03 2E E7 D1 FE 7E 8B C4 E8 36 -- 06BFD0
03 2E E7 D1 FE 7E 8B 0E 75 04 3B 26 05 8B C5 0A -- 06BFE0
E8 3E C5 2E CB EB FE 46 FF FF FF 05 C7 C5 08 3E -- 06BFF0
1E 8E 2E C5 04 3E 03 2E F8 8B 06 05 6B C4 01 FE -- 06C000
2E 04 C4 83 00 64 4E E3 9A 35 FF 02 75 FF C5 06 -- 06C010
2E C5 04 3E 03 2E F8 8B 06 04 6B 26 C4 E8 36 C4 -- 06C020
00 FE 46 C7 02 29 E9 00 00 04 45 C7 C5 06 1E 8E -- 06C030
FE 7E 8B C4 E8 36 C4 2E 57 7D 01 00 FE 7E 81 00 -- 06C040
3B 26 05 8B C5 0A 1E 8E 2E C5 08 3E 03 2E E7 D1 -- 06C050
FF 05 C7 C5 08 3E 03 2E E7 D1 FE 7E 8B 10 75 04 -- 06C060
3E 03 2E E7 D1 FE 7E 8B C4 E8 36 C4 2E 27 EB FF -- 06C070
7E 8B 0C 7E 04 3B 26 05 8B C5 0A 1E 8E 2E C5 08 -- 06C080
C7 A2 EB FE 46 FF 0D FF C5 08 3E 03 2E E7 D1 FE -- 06C090
03 7C 05 3B FC 46 8B C4 E0 3E C5 2E 00 00 FC 46 -- 06C0A0
3E 03 2E F8 8B 06 05 6B C4 E8 3E C5 2E 00 A2 E9 -- 06C0B0
7E 03 C4 E4 3E C5 2E 35 C4 C5 06 1E 8E 2E C5 04 -- 06C0C0
26 C4 E8 36 C4 2E 75 75 04 3A 26 E4 2A 05 8A FC -- 06C0D0
8B C5 06 1E 8E 2E C5 04 3E 03 2E F8 8B 06 04 6B -- 06C0E0
2E FE 46 89 FC 46 8B 05 29 C4 E0 3E C5 2E 04 45 -- 06C0F0
```

```
C4 E8 3E C5 2E 3A 7D 05 3B FE 46 8B C4 E0 3E C5 -- 06C100
06 06 8E 2E C5 04 36 03 2E F0 8B 06 C1 6B 0D 8B -- 06C110

1E 8E 2E C4 E4 3E 03 2E 04 7C 03 26 FC 7E 8B C5 -- 06C120
05 88 FC 7E 03 C4 E4 3E 8B 2E E4 2A 05 8A C4 E6 -- 06C130
FF FC 46 89 05 8B C4 E0 3E C5 2E BA EB FE 46 FF -- 06C140
2E F8 8B 06 05 6B C4 E8 3E C5 2E FF 4F E9 FC 46 -- 06C150
E3 9A 35 FF 02 75 FF C5 06 1E 8E 2E C5 04 3E 03 -- 06C160
8B 06 04 6B 26 C4 E8 36 C4 2E 04 C4 83 00 64 4E -- 06C170
00 00 04 45 C7 C5 06 1E 8E 2E C5 04 3E 03 2E F8 -- 06C180
2E C4 F0 3E 03 2E 02 E7 C1 3D 8B C4 E8 3E C5 2E -- 06C190
C4 83 00 64 4E E3 9A 35 FF 02 75 FF C4 F2 1E 8E -- 06C1A0
C5 18 3E C5 2E FE 46 89 05 8B C4 E8 3E C5 2E 04 -- 06C1B0
06 C7 6B 47 FE 7E 8B 06 6A 53 7D 05 3B FE 46 8B -- 06C1C0
06 FE 46 6B 50 52 C5 06 16 8B 2E C5 04 06 03 2E -- 06C1D0
8B 0A C4 83 00 5C ED 6E 9A 50 52 C5 04 06 03 2E -- 06C1E0
C4 F2 1E 8E 2E C4 F0 3E 03 2E 02 E7 C1 47 FE 7E -- 06C1F0
3E 03 2E 02 E7 C1 FE 7E 8B 02 55 8B 05 8B 01 FE -- 06C200
18 36 C4 2E A1 EB FE 46 FF 02 55 89 05 89 C4 F0 -- 06C210
06 1E 8E 2E C5 04 3E 03 2E F8 8B 06 04 6B 26 C5 -- 06C220
F8 8B 06 04 6B 26 00 00 02 45 C7 00 00 05 C7 C5 -- 06C230
8B C5 18 3E C5 2E 00 00 04 45 C7 C5 04 3E 03 2E -- 06C240
05 C7 C4 F2 1E 8E 2E C4 F0 3E 03 2E 02 E7 C1 3D -- 06C250
00 06 C8 57 56 CB 5E 5F C9 00 00 02 45 C7 00 00 -- 06C260
7D 04 FC 7E 83 00 00 FC 46 C7 00 00 FE 46 C7 00 -- 06C270
C5 1C 3E 03 2E E7 D1 FC 7E 8B C5 20 36 C4 2E 75 -- 06C280
00 FA 46 C7 55 74 04 23 26 05 8B C5 1E 1E 8E 2E -- 06C290
FC 5E 8B E7 D1 FA 7E 8B 49 7D 01 00 FA 7E 81 00 -- 06C2A0
8B DF 03 C5 26 06 8E 2E C5 24 1E 03 2E 09 E3 C1 -- 06C2B0
2E C4 F4 3E 03 2E 09 E7 C1 FC 7E 8B E6 D1 FA 76 -- 06C2C0
FE 46 C7 0F 74 07 3B 26 05 8B FE 03 C4 F6 1E 8E -- 06C2D0
EB FA 46 FF 00 04 FC 46 C7 01 00 FA 46 C7 00 01 -- 06C2E0
C8 57 56 CB 5E 5F C9 FE 46 8B 85 EB FC 46 FF B0 -- 06C2F0
3D 05 8B C4 A8 3E C5 2E 00 00 FE 46 C7 00 00 02 -- 06C300
3D 83 C4 FC 3E C5 2E 00 44 C1 C3 9A 05 75 00 02 -- 06C310
03 75 00 3D 83 C4 F8 3E C5 2E 00 B2 E9 03 74 00 -- 06C320
36 FF 2E C4 B6 36 FF 2E 50 FE 46 8D 16 00 99 E9 -- 06C330
C5 2E 10 6A C4 BC 36 FF 2E C4 BE 36 FF 2E C4 B4 -- 06C340
D0 9A 01 43 68 0A 6A 00 6A 03 6A 35 FF C4 B8 3E -- 06C350
C4 B6 36 FF 2E 50 FE 46 8D 16 18 C4 83 00 64 40 -- 06C360
6A C4 E4 36 FF 2E C4 E6 36 FF 2E C4 B4 36 FF 2E -- 06C370
43 68 0A 6A 00 6A 04 6A 35 FF C4 E0 3E C5 2E 10 -- 06C380
FF 2E 50 FE 46 8D 16 18 C4 83 00 64 40 D0 9A 01 -- 06C390
36 FF 2E C4 D6 36 FF 2E C4 B4 36 FF 2E C4 B6 36 -- 06C3A0
6A 00 6A 00 6A 35 FF C4 D0 3E C5 2E 10 6A C4 D4 -- 06C3B0
FC 3E C5 2E 18 C4 83 00 64 40 D0 9A 01 43 68 0A -- 06C3C0
00 3D 83 C4 F8 3E C5 2E 00 E1 E9 00 01 05 C7 C4 -- 06C3D0
75 FF FF 3D 05 8B C4 E8 3E C5 2E 00 CB E9 03 75 -- 06C3E0
C4 B4 36 FF 2E C4 B6 36 FF 2E 50 FE 46 8D 16 26 -- 06C3F0
C5 2E 10 6A C4 D4 36 FF 2E C4 D6 36 FF 2E 01 FE -- 06C400
FF 2E 50 FE 46 8D 16 24 EB 03 6A 35 FF C4 D0 3E -- 06C410
36 FF 2E C4 D6 36 FF 2E C4 B4 36 FF 2E C4 B6 36 -- 06C420
6A 00 6A 02 6A 35 FF C4 D0 3E C5 2E 10 6A C4 D4 -- 06C430
FE 46 8D 16 18 C4 83 00 64 40 D0 9A 01 43 68 0A -- 06C440
C4 BE 36 FF 2E C4 B4 36 FF 2E C4 B6 36 FF 2E 50 -- 06C450
00 6A 35 FF C4 B8 3E C5 2E 10 6A C4 BC 36 FF 2E -- 06C460
16 18 C4 83 00 64 40 D0 9A 01 43 68 0A 6A 00 6A -- 06C470
FF 2E C4 B4 36 FF 2E C4 B6 36 FF 2E 50 FE 46 8D -- 06C480
FF C4 E0 3E C5 2E 10 6A C4 E4 36 FF 2E C4 E6 36 -- 06C490
83 00 64 40 D0 9A 01 43 68 0A 6A 00 6A 00 6A 35 -- 06C4A0
```

480

```
74 00 FE 7E 83 00 00 05 C7 C4 FC 3E C5 2E 18 C4 -- 06C4B0
C0 2B 02 EB 02 C4 83 00 2C D0 F8 9A FE 76 FF 0D -- 06C4C0
9A 50 9C 46 8D 16 00 00 68 C8 57 56 CB 5E 5F C9 -- 06C4D0
89 00 7F 25 E4 2A E2 46 8A 04 C4 83 00 5C D0 B3 -- 06C4E0
E8 3E C5 2E 3B 74 00 3D 83 C4 D0 3E C5 2E 9A 46 -- 06C4F0
C4 E8 36 C4 2E 01 A1 E9 03 75 FF FF 3D 05 8B C4 -- 06C500
8B C5 0A 1E 8E 2E C5 08 3E 03 2E E7 D1 9A 7E 8B -- 06C510
2C D0 F8 9A 12 79 68 01 68 E9 03 75 04 3B 26 05 -- 06C520
02 3D 05 8B C4 A8 3E C5 2E 01 A8 E9 02 C4 83 00 -- 06C530
3E 03 2E E7 D1 9A 7E 8B 00 44 C1 C3 9A 05 75 00 -- 06C540
AC E9 03 74 00 01 3D 05 8B C5 02 1E 8E 2E C5 00 -- 06C550
0B 98 46 89 02 C4 83 00 44 B7 AA 9A 9A 76 FF 00 -- 06C560
3D 05 8B C4 E8 3E C5 2E B4 EB 12 7A 68 05 74 C0 -- 06C570
74 00 3D 83 C4 FC 3E C5 2E 01 58 E9 03 74 FF FF -- 06C580
50 98 46 8D 16 26 74 00 3D 83 C4 F8 3E C5 2E 30 -- 06C590
2E C4 D6 36 FF 2E C4 B4 36 FF 2E C4 B6 36 FF 2E -- 06C5A0
EB 00 6A 35 FF C4 D0 3E C5 2E 10 6A C4 D4 36 FF -- 06C5B0
50 98 46 8D 16 33 75 00 3D 83 C4 FC 3E C5 2E 2E -- 06C5C0
2E C4 D6 36 FF 2E C4 B4 36 FF 2E C4 B6 36 FF 2E -- 06C5D0
6A 03 6A 35 FF C4 D0 3E C5 2E 10 6A C4 D4 36 FF -- 06C5E0
7E 83 18 C4 83 00 64 40 D0 9A 01 43 68 0A 6A 00 -- 06C5F0
2E FF 1F E9 98 76 FF 00 D8 E9 03 75 00 98 01 FE -- 06C600
76 FF 00 B1 E9 03 74 FF FF 3D 05 8B C4 E8 3E C5 -- 06C610
3D 83 C4 FC 3E C5 2E 02 C4 83 00 44 B6 5D 9A 9A -- 06C620
36 FF 2E C4 B6 36 FF 2E 50 98 46 8D 16 1C 74 00 -- 06C630
2E 24 EB 03 6A 01 6A 10 6A 50 9A 46 8D 16 C4 B4 -- 06C640
FF 2E 50 98 46 8D 16 29 74 00 3D 83 C4 F8 3E C5 -- 06C650
6A 10 6A 50 9A 46 8D 16 C4 B4 36 FF 2E C4 B6 36 -- 06C660
83 00 64 40 D0 9A 01 43 68 0A 6A 00 6A 00 6A 01 -- 06C670
FF 05 C7 C4 E8 3E C5 2E 81 75 00 98 7E 83 18 C4 -- 06C680
1E 8E 2E C5 00 3E 03 2E E7 D1 9A 7E 8B 4E EB FF -- 06C690
C4 2E 33 EB FE 8D E9 03 74 00 01 3D 05 8B C5 02 -- 06C6A0
1E 8E 2E C5 08 3E 03 2E E7 D1 9A 7E 8B C4 E8 36 -- 06C6B0
FF FE 5C E9 FE 6D E9 03 75 04 3B 26 05 8B C5 0A -- 06C6C0
74 C0 0B 98 46 89 02 C4 83 00 44 B4 1D 9A 9A 76 -- 06C6D0
C4 C0 3E C5 2E 00 00 02 C8 57 56 CB 5E 5F C9 A7 -- 06C6E0
2E 51 74 00 3D 83 C4 B0 3E C5 2E 5B 74 00 3D 83 -- 06C6F0
FF 2E 50 FE 46 8D 16 47 74 00 3D 83 C4 C4 3E C5 -- 06C700
36 FF 2E C4 CE 36 FF 2E C4 B4 36 FF 2E C4 B6 36 -- 06C710
6A 00 6A 05 6A 35 FF C4 C8 3E C5 2E 10 6A C4 CC -- 06C720
00 FE 7E 83 18 C4 83 00 64 40 D0 9A 01 43 68 0A -- 06C730
01 D1 E9 02 C4 83 00 2C D0 F8 9A FE 76 FF 0E 74 -- 06C740
2E C4 B4 36 FF 2E C4 B6 36 FF 2E 50 FE 46 8D 16 -- 06C750
C4 B8 3E C5 2E 10 6A C4 BC 36 FF 2E C4 BE 36 FF -- 06C760
00 64 40 D0 9A 01 43 68 0A 6A 00 6A 04 6A 35 FF -- 06C770
2C D0 F8 9A FE 76 FF 0A 74 00 FE 7E 83 18 C4 83 -- 06C780
40 D0 9A 03 87 68 02 6A 50 FE 46 8D 16 B7 EB 00 -- 06C790
C4 C0 3E C5 2E DE 75 00 FE 7E 83 08 C4 83 00 64 -- 06C7A0
16 3C 74 00 3D 83 C4 B0 3E C5 2E 46 74 00 3D 83 -- 06C7B0
FF 2E C4 B4 36 FF 2E C4 B6 36 FF 2E 50 FE 46 8D -- 06C7C0
FF C4 D8 3E C5 2E 10 6A C4 DC 36 FF 2E C4 DE 36 -- 06C7D0
83 00 64 40 D0 9A 01 43 68 0A 6A 00 6A 04 6A 35 -- 06C7E0
C4 B0 3E C5 2E FF 47 E9 03 74 00 FE 7E 83 18 C4 -- 06C7F0
C4 FC 3E C5 2E 00 00 05 C7 04 74 00 3D 83 01 FE -- 06C800
E9 03 74 00 3D 83 C4 F8 3E C5 2E 0D 75 00 3D 83 -- 06C810
B4 36 FF 2E C4 B6 36 FF 2E 50 FE 46 8D 16 00 C1 -- 06C820
3E C5 2E 10 6A C4 BC 36 FF 2E C4 BE 36 FF 2E C4 -- 06C830
40 D0 9A 01 43 68 0A 6A 00 6A 03 6A 35 FF C4 B8 -- 06C840
8D 16 FF 2D E9 03 74 00 FE 7E 83 18 C4 83 00 64 -- 06C850
```

```
36  FF  2E  C4  B4  36  FF  2E  C4  B6  36  FF  2E  50  FE  46  --  06C860
35  FF  C4  D0  3E  C5  2E  10  6A  C4  D4  36  FF  2E  C4  D6  --  06C870
C4  83  00  64  40  D0  9A  01  43  68  0A  6A  00  6A  04  6A  --  06C880
2E  50  FE  46  8D  16  FE  F1  E9  03  74  00  FE  7E  83  18  --  06C890
FF  2E  C4  E6  36  FF  2E  C4  B4  36  FF  2E  C4  B6  36  FF  --  06C8A0
00  6A  04  6A  35  FF  C4  E0  3E  C5  2E  10  6A  C4  E4  36  --  06C8B0
FE  7E  83  18  C4  83  00  64  40  D0  9A  01  43  68  0A  6A  --  06C8C0
C4  83  00  44  B6  5D  9A  0A  76  FF  FE  B5  E9  03  74  00  --  06C8D0
8D  16  02  C4  83  00  44  B6  5D  9A  0A  76  FF  3E  EB  02  --  06C8E0
36  FF  2E  C4  B4  36  FF  2E  C4  B6  36  FF  2E  50  FE  46  --  06C8F0
35  FF  C4  B8  3E  C5  2E  10  6A  C4  BC  36  FF  2E  C4  BE  --  06C900
C4  83  00  64  40  D0  9A  01  43  68  0A  6A  00  6A  00  6A  --  06C910
3E  C5  2E  00  00  04  C8  57  56  CB  5E  5F  C9  C0  2B  18  --  06C920
03  2E  E7  D1  0A  7E  8B  21  75  FF  FF  3D  05  8B  C4  E8  --  06C930
9A  0A  76  FF  00  01  05  C7  C5  02  1E  8E  2E  C5  00  3E  --  06C940
2E  E7  D1  0A  7E  8B  00  97  E9  02  C4  83  00  44  B7  2B  --  06C950
C4  E8  3E  C5  2E  05  8B  C5  0A  1E  8E  2E  C5  08  3E  03  --  06C960
06  04  6B  26  C4  E8  36  C4  2E  00  00  FE  46  C7  05  89  --  06C970
3B  FE  46  8B  C5  06  1E  8E  2E  C5  04  3E  03  2E  F8  8B  --  06C980
03  2E  F0  8B  06  07  6B  C4  E8  1E  C5  2E  5D  7D  04  45  --  06C990
8E  26  3C  03  26  FE  7E  8B  C5  06  06  8E  2E  C5  04  36  --  06C9A0
8B  26  C4  E0  36  C4  2E  FC  46  89  E4  2A  05  8A  02  5C  --  06C9B0
05  88  C4  E6  1E  8E  2E  C4  E4  3E  03  2E  04  FF  26  3C  --  06C9C0
C7  C5  02  1E  8E  2E  C5  00  3E  03  2E  E7  D1  FC  7E  8B  --  06C9D0
EB  FE  46  FF  02  C4  83  00  44  B7  2B  9A  50  00  01  05  --  06C9E0
00  00  FE  46  C7  00  00  02  C8  57  56  CB  5E  5F  C9  86  --  06C9F0
C5  2E  5D  7D  05  3B  FE  46  8B  C4  D0  3E  C5  2E  01  FE  --  06CA00
C4  2E  48  75  0A  46  3B  E4  2A  05  8A  F8  03  C4  D4  3E  --  06CA10
8E  2E  C4  BC  3E  03  2E  04  FF  26  3C  8B  26  C4  B8  36  --  06CA20
48  05  8B  C4  D0  3E  C5  2E  05  88  0A  46  8B  C4  BE  1E  --  06CA30
8E  2E  C4  D4  3E  03  2E  47  FE  7E  8B  21  74  FE  46  3B  --  06CA40
88  FE  7E  03  C4  D4  3E  8B  2E  E4  2A  05  8A  C4  D6  1E  --  06CA50
C4  D0  3E  C5  2E  97  EB  FE  46  FF  D2  EB  FE  46  FF  05  --  06CA60
D1  0A  7E  8B  00  00  06  C8  57  56  CB  5E  5F  C9  0D  FF  --  06CA70
FF  FF  3D  05  8B  C5  0A  1E  8E  2E  C5  08  3E  03  2E  E7  --  06CA80
01  B8  06  75  00  10  3D  05  8B  C5  18  3E  C5  2E  33  75  --  06CA90
8E  2E  C5  00  3E  03  2E  E7  D1  0A  7E  8B  01  7B  E9  00  --  06CAA0
83  00  44  B9  57  9A  0A  76  FF  00  02  05  C7  C5  02  1E  --  06CAB0
2E  C5  08  3E  03  2E  E7  D1  0A  7E  8B  01  58  E9  02  C4  --  06CAC0
FE  46  C7  05  89  C4  E8  3E  C5  2E  05  8B  C5  0A  1E  8E  --  06CAD0
A2  E9  03  7C  05  3B  FE  46  8B  C4  E0  3E  C5  2E  00  00  --  06CAE0
C5  04  3E  03  2E  F8  8B  06  05  6B  C4  E8  3E  C5  2E  00  --  06CAF0
8A  FE  7E  03  C4  E4  3E  C5  2E  35  C4  C5  06  1E  8E  2E  --  06CB00
04  6B  26  C4  E8  36  C4  2E  75  75  04  3A  26  E4  2A  05  --  06CB10
04  45  8B  C5  06  1E  8E  2E  C5  04  3E  03  2E  F8  8B  06  --  06CB20
3E  C5  2E  FC  46  89  FE  46  8B  05  29  C4  E0  3E  C5  2E  --  06CB30
0D  8B  C4  E8  3E  C5  2E  3A  7D  05  3B  FC  46  8B  C4  E0  --  06CB40
8B  C5  06  06  8E  2E  C5  04  36  03  2E  F0  8B  06  C1  6B  --  06CB50
C4  E6  1E  8E  2E  C4  E4  3E  03  2E  04  7C  03  26  FC  7E  --  06CB60
46  FF  05  88  FC  7E  03  C4  E4  3E  8B  2E  E4  2A  05  8A  --  06CB70
FE  46  FF  FE  46  89  05  8B  C4  E0  3E  C5  2E  BA  EB  FC  --  06CB80
04  6B  26  C4  E8  36  C4  2E  00  00  FE  46  C7  FF  4F  E9  --  06CB90
FE  46  8B  C5  06  1E  8E  2E  C5  04  3E  03  2E  F8  8B  06  --  06CBA0
2E  F0  8B  06  07  6B  C4  E8  1E  C5  2E  46  7D  04  45  3B  --  06CBB0
26  3C  03  26  FE  7E  8B  C5  06  06  8E  2E  C5  04  36  03  --  06CBC0
2E  E7  D1  FA  7E  8B  FA  46  89  E4  2A  05  8A  02  5C  8E  --  06CBD0
57  9A  50  00  02  05  C7  C5  02  1E  8E  2E  C5  00  3E  03  --  06CBE0
9A  00  6A  00  6A  9D  EB  FE  46  FF  02  C4  83  00  44  B9  --  06CBF0
```

```
00 6A 00 54 C8 1C 9A 04 C4 83 00 44 5A 4B 01 FE -- 06CC00
2B 04 C4 83 00 44 B9 D6 9A 35 FF C4 E8 3E C5 2E -- 06CC10
00 00 FE 46 C7 00 00 02 C8 57 56 CB 5E 5F C9 C0 -- 06CC20
BC 3E C5 2E 5D 7D 05 3B FE 46 8B C4 B8 3E C5 2E -- 06CC30
D0 36 C4 2E 48 75 0A 46 3B E4 2A 05 8A F8 03 C4 -- 06CC40
D6 1E 8E 2E C4 D4 3E 03 2E 04 FF 26 3C 8B 26 C4 -- 06CC50
46 3B 48 05 8B C4 B8 3E C5 2E 05 88 0A 46 8B C4 -- 06CC60
BE 1E 8E 2E C4 BC 3E 03 2E 47 FE 7E 8B 21 74 FE -- 06CC70
FF 05 88 FE 7E 03 C4 BC 3E 8B 2E E4 2A 05 8A C4 -- 06CC80
0D FF C4 B8 3E C5 2E 97 EB FE 46 FF D2 EB FE 46 -- 06CC90
2E 50 FA 46 8D 16 00 00 0C C8 57 56 CB 5E 5F C9 -- 06CCA0
FF 2E C4 BE 36 FF 2E C4 B4 36 FF 2E C4 B6 36 FF -- 06CCB0
00 6A 04 6A 35 FF C4 B8 3E C5 2E 10 6A C4 BC 36 -- 06CCC0
46 8D 16 18 C4 83 00 64 40 D0 9A 01 43 68 0A 6A -- 06CCD0
D6 36 FF 2E C4 B4 36 FF 2E C4 B6 36 FF 2E 50 FA -- 06CCE0
6A 35 FF C4 D0 3E C5 2E 10 6A C4 D4 36 FF 2E C4 -- 06CCF0
18 C4 83 00 64 40 D0 9A 01 43 68 0A 6A 00 6A 04 -- 06CD00
C5 2E 00 00 F8 46 C7 03 63 E9 03 74 00 FA 7E 83 -- 06CD10
0A 46 3B 01 8B E9 03 7C 05 3B F8 46 8B C5 18 3E -- 06CD20
C5 2E 02 C4 83 00 44 C2 A1 9A 50 01 7D E9 03 75 -- 06CD30
00 3D 83 C4 B0 3E C5 2E 58 74 00 3D 83 C4 C0 3E -- 06CD40
FA 46 8D 16 44 74 00 3D 83 C4 C4 3E C5 2E 4E 74 -- 06CD50
C4 CE 36 FF 2E C4 B4 36 FF 2E C4 B6 36 FF 2E 50 -- 06CD60
05 6A 35 FF C4 C8 3E C5 2E 10 6A C4 CC 36 FF 2E -- 06CD70
83 18 C4 83 00 64 40 D0 9A 01 43 68 0A 6A 00 6A -- 06CD80
02 E4 E9 00 2C D0 F8 9A FA 76 FF 0B 74 00 FA 7E -- 06CD90
6B C4 B4 36 FF 2E C4 B6 36 FF 2E 50 FA 46 8D 16 -- 06CDA0
FF C5 06 1E 8E 2E C5 04 3E 03 2E F8 8B 06 F8 46 -- 06CDB0
04 3E 03 2E F8 8B 06 F8 46 6B 10 6A 35 FF 02 75 -- 06CDC0
40 D0 9A 01 43 68 0A 6A 00 6A 02 6A 04 75 FF C5 -- 06CDD0
8D 16 02 8E E9 03 74 00 FA 7E 83 18 C4 83 00 64 -- 06CDE0
08 C4 83 00 64 40 D0 9A 03 87 68 02 6A 50 FA 46 -- 06CDF0
36 FF 2E 50 FA 46 8D 16 8F 75 00 FA 7E 83 01 FE -- 06CE00
3E 03 2E F8 8B 06 F8 46 6B C4 B4 36 FF 2E C4 B6 -- 06CE10
46 6B 10 6A 35 FF 02 75 FF C5 06 1E 8E 2E C5 04 -- 06CE20
00 6A 04 6A 04 75 FF C5 04 3E 03 2E F8 8B 06 F8 -- 06CE30
FA 7E 83 18 C4 83 00 64 40 D0 9A 01 43 68 0A 6A -- 06CE40
46 74 00 3D 83 C4 C0 3E C5 2E 02 28 E9 03 74 00 -- 06CE50
2E 50 FA 46 8D 16 3C 74 00 3D 83 C4 B0 3E C5 2E -- 06CE60
FF 2E C4 DE 36 FF 2E C4 B4 36 FF 2E C4 B6 36 FF -- 06CE70
00 6A 04 6A 35 FF C4 D8 3E C5 2E 10 6A C4 DC 36 -- 06CE80
FA 7E 83 18 C4 83 00 64 40 D0 9A 01 43 68 0A 6A -- 06CE90
04 74 00 3D 83 C4 B0 3E C5 2E FE F1 E9 03 74 00 -- 06CEA0
03 75 FF 0A 7E 83 FE 66 E9 F8 46 FF 00 00 05 C7 -- 06CEB0
44 C2 A1 9A 0A 76 FF 0D 75 00 0C 7E 83 00 D2 E9 -- 06CEC0
7D 04 F6 7E 83 00 00 F6 46 C7 7A EB 02 C4 83 00 -- 06CED0
C5 20 36 C4 2E F4 46 89 05 8B C5 28 3E C5 2E 6F -- 06CEE0
8B C5 1E 1E 8E 2E C5 1C 3E 03 2E E7 D1 F6 7E 8B -- 06CEF0
76 FF 50 FA 46 8D 16 42 74 F4 46 23 04 23 26 05 -- 06CF00
2E C4 F4 06 03 2E 09 E0 C1 F6 46 8B FC 76 FF FE -- 06CF10
C5 2C 3E C5 2E 00 6A F6 76 FF 50 52 C4 F6 16 8B -- 06CF20
83 00 64 40 D0 9A 01 45 68 09 6A 50 E4 2A 05 8A -- 06CF30
8B EB F6 46 FF FE 4C E9 03 74 00 FA 7E 83 16 C4 -- 06CF40
6B C4 B4 36 FF 2E C4 B6 36 FF 2E 50 FA 46 8D 16 -- 06CF50
FF C5 06 1E 8E 2E C5 04 3E 03 2E F8 8B 06 0A 46 -- 06CF60
04 3E 03 2E F8 8B 06 0A 46 6B 10 6A 35 FF 02 75 -- 06CF70
40 D0 9A 01 43 68 0A 6A 00 6A 02 6A 04 75 FF C5 -- 06CF80
C5 2E 00 E0 E9 03 74 00 FA 7E 83 18 C4 83 00 64 -- 06CF90

00 3D 83 C4 F8 3E C5 2E 2D 75 00 3D 83 C4 FC 3E -- 06CFA0
```

483

```
B4 36 FF 2E C4 B6 36 FF 2E 50 FA 46 8D 16 23 74 -- 06CFB0
3E C5 2E 10 6A C4 BC 36 FF 2E C4 BE 36 FF 2E C4 -- 06CFC0
2E C4 B6 36 FF 2E 50 FA 46 8D 16 00 90 E9 C4 B8 -- 06CFD0
10 6A C4 BC 36 FF 2E C4 BE 36 FF 2E C4 B4 36 FF -- 06CFE0
01 43 68 0A 6A 00 6A 03 6A 35 FF C4 B8 3E C5 2E -- 06CFF0
2E 50 FA 46 8D 16 18 C4 83 00 64 40 D0 9A 01 FE -- 06D000
FF 2E C4 E6 36 FF 2E C4 B4 36 FF 2E C4 B6 36 FF -- 06D010
00 6A 04 6A 35 FF C4 E0 3E C5 2E 10 6A C4 E4 36 -- 06D020
3E C5 2E 18 C4 83 00 64 40 D0 9A 01 43 68 0A 6A -- 06D030
B6 36 FF 2E 50 FA 46 8D 16 33 74 00 3D 83 C4 F8 -- 06D040
C4 D4 36 FF 2E C4 D6 36 FF 2E C4 B4 36 FF 2E C4 -- 06D050
68 0A 6A 00 6A 00 6A 35 FF C4 D0 3E C5 2E 10 6A -- 06D060
0B 74 00 FA 7E 83 18 C4 83 00 64 40 D0 9A 01 43 -- 06D070
56 CB 5E 5F C9 02 C4 83 00 2C D0 F8 9A FA 76 FF -- 06D080
D0 3E C5 2E 00 01 05 C7 0A 7E C5 00 00 04 C8 57 -- 06D090
12 82 68 00 02 05 C7 0A 7E C5 15 75 00 3D 83 C4 -- 06D0A0
C4 F8 3E C5 2E 01 B7 E9 02 C4 83 00 2C D0 F8 9A -- 06D0B0
9A 05 74 00 3D 83 C4 FC 3E C5 2E 0F 74 00 3D 83 -- 06D0C0
03 74 FF FF 3D 05 8B C4 E8 3E C5 2E 00 44 B0 39 -- 06D0D0
B8 06 74 C0 0B FC 46 89 00 5C 13 1B 9A 01 39 E9 -- 06D0E0
04 FF 26 04 8B 26 C5 18 36 C4 2E 01 7D E9 00 01 -- 06D0F0
50 40 05 8B C4 D0 3E C5 2E 05 89 C4 E8 3E C5 2E -- 06D100
1C 6B 26 C4 E8 36 C4 2E 02 C4 83 00 64 4E 56 9A -- 06D110
89 05 89 C5 06 1E 8E 2E C5 04 3E 03 2E FB 8B 06 -- 06D120
3B FE 46 8B C4 D0 3E C5 2E 00 00 FE 46 C7 02 55 -- 06D130
C5 2E E4 2A 05 8A F8 03 C4 D4 3E C5 2E 56 7D 05 -- 06D140
2E C5 04 36 03 2E F2 8B 06 D1 6B 0F 8B C4 E8 1E -- 06D150
05 88 02 5C 8E 26 3C 03 26 FE 7E 8B C5 06 06 8E -- 06D160
E6 D1 F0 8B E4 2A 05 8A FE 7E 03 C4 D4 3E C5 2E -- 06D170
8B C4 E8 3E C5 2E C5 0A 06 8E 2E C5 08 36 03 2E -- 06D180
05 8B C4 D0 3E C5 2E 9E EB FE 46 FF 04 89 26 05 -- 06D190
C5 04 3E 03 2E FA 8B 06 14 6B 26 C4 E8 36 C4 2E -- 06D1A0
2E C4 F6 36 FF 2E 57 56 04 45 89 C5 06 1E 8E 2E -- 06D1B0
00 68 C5 24 36 FF 2E C5 26 36 FF 2E C4 F4 36 FF -- 06D1C0
36 FF 2E 50 FC 46 8D 16 5E 5F 00 5C FF 6A 9A 04 -- 06D1D0
D4 36 FF 2E C4 D6 36 FF 2E C4 B4 36 FF 2E C4 B6 -- 06D1E0
0A 6A 00 6A 02 6A 35 FF C4 D0 3E C5 2E 10 6A C4 -- 06D1F0
FC 7E 83 18 C4 83 00 64 40 D0 9A 01 43 68 01 FE -- 06D200
BD 9A FE 99 E9 00 2C D0 F8 9A FC 76 FF 4B 74 00 -- 06D210
56 45 EB 00 02 B8 05 74 C0 0B FC 46 89 00 44 C0 -- 06D220
C4 E8 3E C5 2E C4 F4 36 FF 2E C4 F6 36 FF 2E 57 -- 06D230
FF C4 F2 1E 8E 2E C4 F0 3E 03 2E 02 E7 C1 3D 8B -- 06D240
C5 2E 5E 5F 00 5C FF 6A 9A 04 00 68 35 FF 02 75 -- 06D250
64 13 07 9A 50 FC 46 8D 16 00 00 05 C7 C4 A4 3E -- 06D260
46 C7 00 00 0A C8 57 56 CB 5E 5F C9 04 C4 83 00 -- 06D270
00 01 B8 06 75 00 3D 83 C5 30 3E C5 2E 00 00 FA -- 06D280
38 3E C5 2E 00 00 05 C7 C4 E0 3E C5 2E 00 FA E9 -- 06D290
C6 C5 3C 3E C5 2E 05 88 C5 34 3E C5 2E 05 8B C5 -- 06D2A0
A8 3E C5 2E 61 75 00 3D 83 C4 F8 3E C5 2E 03 05 -- 06D2B0
36 FF 2E 50 FE 46 8D 16 22 75 00 01 3D 05 8B C4 -- 06D2C0
BC 36 FF 2E C4 BE 36 FF 2E C4 B4 36 FF 2E C4 B6 -- 06D2D0
2E 50 FE 46 8D 16 20 EB C4 B8 3E C5 2E 10 6A C4 -- 06D2E0
FF 2E C4 D6 36 FF 2E C4 B4 36 FF 2E C4 B6 36 FF -- 06D2F0
00 6A 03 6A 35 FF C4 D0 3E C5 2E 10 6A C4 D4 36 -- 06D300
FC 46 C7 18 C4 83 00 64 40 D0 9A 01 43 68 0A 6A -- 06D310
F8 76 FF 50 FE 46 8D 16 51 7D 04 FC 7E 83 00 00 -- 06D320
8B 2E C5 40 06 03 2E 09 E0 C1 FC 46 8B F6 76 FF -- 06D330

8A C5 2C 3E C5 2E 02 6A FC 76 FF 50 52 C5 42 16 -- 06D340
C4 83 00 64 40 D0 9A 01 45 68 09 6A 50 E4 2A 05 -- 06D350
```

484

```
83 00 2C DO F8 9A FE 76 FF 0D 74 00 FE 7E 83 16 -- 06D360
05 C7 C5 18 3E C5 2E A9 EB FC 46 FF 19 EB 02 C4 -- 06D370
5E 5F C9 CO 2B 00 00 05 C7 C4 E8 3E C5 2E 00 01 -- 06D380
28 3E C5 2E C5 20 36 C4 2E 00 00 0E C8 57 56 CB -- 06D390
7E 83 00 00 FE 46 C7 FC 46 89 04 23 26 05 8B C5 -- 06D3A0
1C 3E 03 2E E7 D1 FE 7E 8B 00 A0 E9 03 7C 04 FE -- 06D3B0
3E C5 2E 33 74 FC 46 23 05 8B C5 1E 1E 8E 2E C5 -- 06D3C0
EE 16 8B 2E C4 EC 06 03 2E 07 E0 C1 05 8B C4 E8 -- 06D3D0
08 C4 83 00 34 1F 2F 9A 01 6A FE 76 FF 50 52 C4 -- 06D3E0
0E EB 00 01 F2 45 C7 1F 16 FD 03 E7 D1 FE 7E 8B -- 06D3F0
00 00 F2 45 C7 1F 16 FD 03 E7 D1 FE 7E 8B 01 FE -- 06D400
8B 2E C5 44 06 03 2E 09 E0 C1 FE 46 8B 01 00 68 -- 06D410
02 E7 C1 3C 8B 26 C4 E8 36 C4 2E 50 52 C5 46 16 -- 06D420
09 E0 C1 FE 46 8B C4 F2 1E 8E 2E C4 F0 3E 03 2E -- 06D430
00 5C F6 28 9A 02 6A 01 6A 50 52 02 55 8B 05 03 -- 06D440
8D 16 50 F2 46 8D 16 FF 57 E9 FE 46 FF 0E C4 83 -- 06D450
B8 05 74 CO 0B 08 C4 83 00 2C B6 2C 9A 50 FA 46 -- 06D460
7E 83 0B 74 00 3D 83 C5 48 3E C5 2E 21 EB 00 01 -- 06D470
29 9A 00 2C CC CD 9A 00 54 99 B2 9A 05 74 00 FA -- 06D480
56 00 01 02 C8 57 56 CB 5E 5F C9 CO 2B 00 54 12 -- 06D490
BC 36 FF 2E C4 BE 36 FF 2E 50 FF 00 86 8D 16 57 -- 06D4A0
2E 5E 5F 00 5C FE EC 9A 35 FF C4 B8 3E C5 2E C4 -- 06D4B0
BE 36 FF 2E 57 56 FE FE 86 89 05 8B C4 B8 3E C5 -- 06D4C0
C4 D4 36 FF 2E C4 D6 36 FF 2E C4 BC 36 FF 2E C4 -- 06D4D0
C5 2E 5E 5F 00 5C FE EC 9A 35 FF C4 DO 3E C5 2E -- 06D4E0
FF 2E 57 56 05 89 C4 B8 3E C5 2E 05 8B C4 DO 3E -- 06D4F0
B6 FF 50 FF 00 86 8D 16 C4 D4 36 FF 2E C4 D6 36 -- 06D500
3E C5 2E FE FE 86 8B 5E 5F 00 5C FE EC 9A FE FE -- 06D510
5E 5F C9 00 01 05 C7 C4 A8 3E C5 2E 05 89 C4 DO -- 06D520
00 01 3D 05 8B C4 A8 3E C5 2E EC 8B 55 57 56 CB -- 06D530
C7 0A 7E C5 1E 75 00 3D 83 C4 DO 3E C5 2E 1E 75 -- 06D540
13 EB 02 C4 83 00 2C DO F8 9A 12 82 68 00 02 05 -- 06D550
01 05 C7 0A 7E C5 E2 74 00 3D 83 C4 B8 3E C5 2E -- 06D560
FE 46 C7 00 00 0A C8 57 56 CB 5E 5F C9 CO 2B 00 -- 06D570
C5 28 3E C5 2E 00 85 E9 03 7C 04 FE 7E 83 00 00 -- 06D580
2E E7 D1 FE 7E 8B C5 20 36 C4 2E F6 46 89 05 8B -- 06D590
46 23 04 23 26 05 8B C5 1E 1E 8E 2E C5 1C 3E 03 -- 06D5A0
7E 8B F8 76 FF FA 76 FF 50 FC 46 8D 16 57 74 F6 -- 06D5B0
46 8B C4 F2 1E 8E 2E C4 F0 3E 03 2E 02 E7 C1 0A -- 06D5C0
00 6A FE 76 FF 50 52 02 55 8B 05 03 09 E0 C1 FE -- 06D5D0
9A 01 45 68 09 6A 50 E4 2A 05 8A C5 2C 3E C5 2E -- 06D5E0
FC 76 FF 0D 74 00 FC 7E 83 16 C4 83 00 64 40 DO -- 06D5F0
E9 FE 46 FF 08 EB 02 C4 83 00 2C DO F8 9A 01 FE -- 06D600
8D 16 00 00 02 C8 57 56 CB 5E 5F C9 CO 2B FF 72 -- 06D610
36 FF 2E C4 B4 36 FF 2E C4 B6 36 FF 2E 50 FE 46 -- 06D620
35 FF C4 D8 3E C5 2E 10 6A C4 DC 36 FF 2E C4 DE -- 06D630
C4 83 00 64 40 DO 9A 01 43 68 0A 6A 00 6A 05 6A -- 06D640
C4 F8 3E C5 2E 3D 74 00 3D 83 C4 C4 3E C5 2E 18 -- 06D650
2E C4 B6 36 FF 2E 50 FE 46 8D 16 33 75 00 3D 83 -- 06D660
10 6A C4 DC 36 FF 2E C4 DE 36 FF 2E C4 B4 36 FF -- 06D670
01 43 68 0A 6A 00 6A 05 6A 35 FF C4 D8 3E C5 2E -- 06D680
C5 42 36 FF 2E 08 00 68 18 C4 83 00 64 40 DO 9A -- 06D690
9A 35 FF 02 75 FF C5 4C 3E C5 2E C5 40 36 FF 2E -- 06D6A0
00 44 77 0B 9A 05 75 CO 0B 0A C4 83 00 54 3C 28 -- 06D6B0
5A 4B 9A 00 6A 00 6A EC 8B 55 57 56 CB 5E 5F C9 -- 06D6C0
57 56 CB 5E 5F C9 00 54 C8 1C 9A 04 C4 83 00 44 -- 06D6D0

49 9A 50 FE 46 8D 16 00 44 57 40 9A 00 00 02 C8 -- 06D6E0
C5 2E 01 6A 24 75 00 FE 7E 83 04 C4 83 00 64 13 -- 06D6F0
46 8D 16 04 C4 83 00 44 B9 D6 9A 35 FF C4 E8 3E -- 06D700
```

485

```
0B 74 00 FE 7E 83 04 C4 83 00 64 13 07 9A 50 FE -- 06D710
56 CB 5E 5F C9 02 C4 83 00 2C D0 F8 9A FE 76 FF -- 06D720
83 00 64 13 07 9A 50 FE 46 8D 16 00 00 02 C8 57 -- 06D730
00 2C D0 F8 9A FE 76 FF 0D 74 00 FE 7E 83 04 C4 -- 06D740
2E 0F 74 00 3D 83 C4 F8 3E C5 2E 22 EB 02 C4 83 -- 06D750
C5 2E 00 44 B0 39 9A 05 74 00 3D 83 C4 FC 3E C5 -- 06D760
00 3C A5 4C 00 CB 5E 5F C9 00 00 05 C7 C4 A4 3E -- 06D770
00 3C 9C 38 00 3C 9C 48 00 3C B3 26 00 24 77 8E -- 06D780
00 3C 96 D0 00 3C AE 54 00 3C B3 2A 00 3C B3 14 -- 06D790
00 3C B4 2A 00 3C B3 16 00 3C 99 A6 00 3C 96 D6 -- 06D7A0
00 3C 9C 4A 00 3C 9D 4A 00 3C 9A A6 00 3C 96 D8 -- 06D7B0
00 3C 6E 86 00 24 57 C0 00 3C 9D 4C 00 24 57 BE -- 06D7C0
00 24 55 5C 00 3C AF 10 00 3C 9C 36 00 3C 91 12 -- 06D7D0
00 24 58 20 00 24 58 00 00 24 76 E2 00 24 55 BC -- 06D7E0
00 24 4D 5C 00 24 75 4E 00 24 3D 14 00 24 57 BC -- 06D7F0
92 52 00 3C 90 C2 00 24 3D 48 00 3C 6E 84 01 FE -- 06D800
6A 40 00 24 45 5C 00 3C 92 54 00 3C 91 0E 00 3C -- 06D810
2E EC 8B 55 57 56 00 3C 96 5A 00 6C 29 F6 00 24 -- 06D820
3E C5 2E 00 00 02 45 C7 00 00 05 C7 DF C8 3E C5 -- 06D830
2E FF FF 05 C7 DF D0 3E C5 2E FF FF 05 C7 DF CC -- 06D840
C9 FF 05 C6 DF D8 3E C5 2E FF 05 C6 DF D4 3E C5 -- 06D850
2E 0C 56 8B 0A 46 8B 00 00 02 C8 57 56 CB 5E 5F -- 06D860
57 56 00 16 FE 46 C7 02 55 89 05 89 DF DC 3E C5 -- 06D870
8D 16 50 00 94 05 DF E0 06 8B 2E DF E2 36 FF 2E -- 06D880
80 FE 46 C7 5E 5F 00 5C FE EC 9A 02 6A 50 FE 46 -- 06D890
00 96 05 DF E0 06 8B 2E DF E2 36 FF 2E 57 56 00 -- 06D8A0
2E 5E 5F 00 5C FE EC 9A 02 6A 50 FE 46 8D 16 50 -- 06D8B0
FF 2E 00 80 68 01 6A 35 FF 02 75 FF DF DC 3E C5 -- 06D8C0
0C C4 83 00 64 3C 51 9A DF E0 36 FF 2E DF E2 36 -- 06D8D0
0C 56 8B 0A 46 8B 00 00 02 C8 57 56 CB 5E 5F C9 -- 06D8E0
56 00 16 FE 46 C7 02 55 89 05 89 DF E4 3E C5 2E -- 06D8F0
16 50 00 94 05 DF E0 06 8B 2E DF E2 36 FF 2E 57 -- 06D900
FE 46 C7 5E 5F 00 5C FE EC 9A 02 6A 50 FE 46 8D -- 06D910
96 05 DF E0 06 8B 2E DF E2 36 FF 2E 57 56 00 80 -- 06D920
5E 5F 00 5C FE EC 9A 02 6A 50 FE 46 8D 16 50 00 -- 06D930
2E 00 80 68 01 6A 35 FF 02 75 FF DF E4 3E C5 2E -- 06D940
C4 83 00 64 3C 51 9A DF E0 36 FF 2E DF E2 36 FF -- 06D950
7F 05 0E 46 8B 00 00 08 C8 57 56 CB 5E 5F C9 0C -- 06D960
FA 46 89 07 E0 C1 F8 46 89 DF E8 3E F7 2E 99 00 -- 06D970
46 89 04 C4 83 00 64 4E A1 9A 50 00 90 05 01 6A -- 06D980
76 FF 0C 76 FF 50 00 90 05 52 57 56 FE 56 89 FC -- 06D990
DF E4 3E C5 2E 5E 5F 00 5C FE EC 9A 0E 76 FF 0A -- 06D9A0
76 FF FE 76 FF 00 80 68 F8 76 FF 35 FF 02 75 FF -- 06D9B0
9A FC 76 FF FE 76 FF 0C C4 83 00 64 3C 51 9A FC -- 06D9C0
01 10 C8 57 56 CB 5E 5F C9 04 C4 83 00 64 4E E3 -- 06D9D0
E4 3E C5 2E 80 46 88 E4 2A 81 46 88 00 FF B8 00 -- 06D9E0
FE F0 86 8D 16 00 80 68 01 6A 35 FF 02 75 FF DF -- 06D9F0
56 CB 5E 5F C9 0C C4 83 00 64 3C 51 9A 50 01 FE -- 06DA00
EE 36 FF 2E DF F0 36 FF 2E 00 80 68 EC 8B 55 57 -- 06DA10
00 5C ED 6E 9A DF EA 36 FF 2E DF EC 36 FF 2E DF -- 06DA20
0A 7E C5 1F 74 00 3D 83 DF F2 3E C5 2E 0A C4 83 -- 06DA30
75 00 09 3D 05 74 00 15 3D 0A 74 00 01 3D 05 8B -- 06DA40
F6 3E C5 2E 09 EB 00 01 05 C7 DF F6 3E C5 2E 0B -- 06DA50
89 DF EE 3E C5 2E 05 8B 0A 7E C5 00 00 05 C7 DF -- 06DA60
7E C5 05 89 DF FA 3E C5 2E 02 45 8B 0A 7E C5 05 -- 06DA70

45 8B 0A 7E C5 05 89 DF FE 3E C5 2E 04 45 8B 0A -- 06DA80
E4 2A 08 45 8A 0A 7E C5 05 89 E0 02 3E C5 2E 06 -- 06DA90
2E E4 2A 09 45 8A 0A 7E C5 05 89 E0 06 3E C5 2E -- 06DAA0
2E E4 2A 0A 45 8A 0A 7E C5 02 45 89 E0 06 3E C5 -- 06DAB0
```

```
2E  E4  2A  0B  45  8A  0A  7E  C5  04  45  89  E0  06  3E  C5  --  06DAC0
3E  C5  2E  0C  45  8B  0A  7E  C5  06  45  89  E0  06  3E  C5  --  06DAD0
89  E0  0A  3E  C5  2E  0E  45  8B  0A  7E  C5  05  89  E0  0A  --  06DAE0
04  45  89  E0  0A  3E  C5  2E  10  45  8B  0A  7E  C5  02  45  --  06DAF0
C5  2E  06  45  89  E0  0A  3E  C5  2E  12  45  8B  0A  7E  C5  --  06DB00
3D  0A  74  00  14  3D  0F  74  00  01  3D  05  8B  DF  EE  3E  --  06DB10
3D  83  E0  12  3E  C5  2E  58  75  00  09  3D  05  74  00  15  --  06DB20
45  8B  0E  7E  C5  0D  EB  02  45  8B  0E  7E  C5  08  74  00  --  06DB30
2E  05  89  E0  0E  3E  C5  2E  E0  16  3E  F7  2E  99  40  02  --  06DB40
EB  04  45  8B  0E  7E  C5  08  74  00  3D  83  E0  12  3E  C5  --  06DB50
C5  2E  E0  16  3E  F7  2E  99  40  04  45  8B  0E  7E  C5  0D  --  06DB60
88  E0  1C  3E  C5  2E  05  8B  0E  7E  C5  05  89  E0  18  3E  --  06DB70
04  3B  26  05  8B  DF  FA  3E  C5  2E  E0  20  36  C4  2E  05  --  06DB80
3B  26  05  8B  DF  FE  3E  C5  2E  E0  24  36  C4  2E  44  75  --  06DB90
26  05  8B  E0  02  3E  C5  2E  E0  28  36  C4  2E  33  75  04  --  06DBA0
C5  2E  18  75  00  3D  80  DF  D4  3E  C5  2E  22  75  04  3B  --  06DBB0
D4  3E  C5  2E  05  89  E0  2C  3E  C5  2E  05  8B  DF  CC  3E  --  06DBC0
02  55  8B  05  8B  E0  30  3E  C5  2E  56  EB  00  05  C6  DF  --  06DBD0
FF  DF  CC  3E  C5  2E  2C  74  12  46  3B  05  75  14  56  3B  --  06DBE0
3E  C5  2E  16  46  8B  05  89  E0  2C  3E  C5  2E  05  8B  05  --  06DBF0
30  3E  C5  2E  14  56  8B  12  46  8B  05  89  E0  34  01  FE  --  06DC00
2E  05  8B  DF  CC  3E  C5  2E  0E  EB  02  55  89  05  89  E0  --  06DC10
C4  2E  01  05  C6  DF  D4  3E  C5  2E  05  89  E0  2C  3E  C5  --  06DC20
54  3B  26  02  55  8B  05  8B  E0  38  3E  C5  2E  E0  3C  36  --  06DC30
00  3D  80  DF  D8  3E  C5  2E  0A  75  04  3B  26  0F  75  02  --  06DC40
C5  2E  10  75  05  0B  02  45  8B  E0  3C  3E  C5  2E  0C  74  --  06DC50
C4  2E  72  EB  05  89  E0  40  3E  C5  2E  05  8B  DF  D0  3E  --  06DC60
54  3B  26  02  55  8B  05  8B  E0  38  3E  C5  2E  E0  3C  36  --  06DC70
02  75  FF  E0  38  3E  C5  2E  42  74  04  3B  26  05  75  02  --  06DC80
FF  DF  D0  3E  C5  2E  04  C4  83  00  64  4E  E3  9A  35  FF  --  06DC90
8B  E0  3C  3E  C5  2E  05  89  E0  40  3E  C5  2E  05  8B  05  --  06DCA0
C5  2E  02  55  89  05  89  E0  38  3E  C5  2E  02  55  8B  05  --  06DCB0
8B  DF  D0  3E  C5  2E  0E  EB  02  55  89  05  89  E0  44  3E  --  06DCC0
01  05  C6  DF  D8  3E  C5  2E  05  89  E0  40  3E  C5  2E  05  --  06DCD0
C8  57  56  CB  5E  5F  C9  00  00  05  C7  E0  48  3E  C5  2E  --  06DCE0
4C  3E  F7  2E  99  E0  D1  02  45  8B  0A  7E  C5  00  00  0C  --  06DCF0
8B  E0  4C  3E  F7  2E  99  E0  D1  04  45  8B  F8  46  89  E0  --  06DD00
05  89  E0  48  3E  C5  2E  C6  03  F8  6E  F7  48  05  8B  F0  --  06DD10
2E  99  E0  D1  02  6C  F7  26  05  8B  0A  7E  C5  0A  76  C4  --  06DD20
E0  48  3E  C5  2E  05  88  E0  4E  3E  C5  2E  DF  E8  3E  F7  --  06DD30
E0  52  3E  C5  2E  99  05  8B  00  F5  E9  03  7F  00  3D  83  --  06DD40
74  00  07  3D  05  8B  DF  EE  3E  C5  2E  02  55  11  05  01  --  06DD50
2E  00  01  05  C7  E0  56  3E  C5  2E  2D  75  00  08  3D  05  --  06DD60
05  8B  E0  44  3E  C5  2E  1A  75  01  3D  80  DF  D8  3E  C5  --  06DD70
05  C6  DF  D8  3E  C5  2E  F6  56  89  F4  46  89  02  55  8B  --  06DD80
3E  C5  2E  00  00  F6  46  C7  00  00  F4  46  C7  0A  EB  00  --  06DD90
46  89  05  8B  E0  34  3E  C5  2E  58  75  01  3D  80  DF  D4  --  06DDA0
FA  46  89  07  E0  C1  DF  E8  3E  F7  2E  99  00  7F  05  FA  --  06DDB0
56  FE  56  89  FC  46  89  02  C4  83  00  64  4E  56  9A  50  --  06DDC0
3E  C5  2E  35  FF  02  75  FF  E0  30  3E  C5  2E  50  52  57  --  06DDD0
C5  2E  FA  46  8B  5E  5F  00  5C  FE  EC  9A  35  FF  E0  34  --  06DDE0
C7  0F  EB  00  05  C6  DF  D4  3E  C5  2E  05  89  E0  5A  3E  --  06DDF0
00  00  FA  46  C7  00  00  FE  46  C7  00  00  FC  46  01  FE  --  06DE00
FF  FA  76  FF  F4  76  FF  F6  76  FF  0A  76  FF  0C  76  FF  --  06DE10

36  FF  2E  DF  F0  36  FF  2E  00  80  68  FC  76  FF  FE  76  --  06DE20
C9  05  89  10  7E  C5  14  C4  83  00  44  CB  63  9A  DF  EE  --  06DE30
46  89  05  8B  1A  7E  C5  00  01  28  C8  57  56  CB  5E  5F  --  06DE40
F4  6E  F7  DF  E8  3E  F7  2E  99  02  44  8B  1A  76  8B  F4  --  06DE50
2E  FE  DA  96  89  FE  D8  86  89  99  C7  8B  E7  D1  F8  8B  --  06DE60
```

487

```
8B F0 8B DF E8 3E F7 2E 99 14 46 8B DF C8 1E C4 -- 06DE70
DA 96 13 FE D8 86 03 02 57 13 26 07 03 26 99 C6 -- 06DE80
55 89 05 89 DF C8 3E C5 2E 00 D2 83 00 0A 05 FE -- 06DE90
00 98 05 DF E0 06 8B 2E DF E2 36 FF 2E 57 56 02 -- 06DEA0
5E 5F 00 5C FE EC 9A 04 6A 53 DF CA 36 FF 2E 50 -- 06DEB0
80 68 0A 76 FF 0C 76 FF 50 FF 70 86 8D 16 57 56 -- 06DEC0
02 75 FF DF DC 3E C5 2E 5E 5F 00 5C FE EC 9A 00 -- 06DED0
3C 51 9A 50 FE E0 86 8D 16 00 80 68 01 6A 35 FF -- 06DEE0
00 A4 E9 03 75 10 46 0B 12 46 8B 0C C4 83 00 64 -- 06DEF0
C4 83 00 64 4E A1 9A 50 00 90 05 14 46 8B 01 6A -- 06DF00
50 00 90 05 52 57 56 FE DE 96 89 FE DC 86 89 04 -- 06DF10
5E 5F 00 5C FE EC 9A 14 76 FF 10 76 FF 12 76 FF -- 06DF20
05 89 E0 5E 3E C5 2E DF E8 3E F7 2E 99 14 46 8B -- 06DF30
FF E0 5E 3E C5 2E 35 FF 02 75 FF DF DC 3E C5 2E -- 06DF40
64 3C 51 9A FE DC B6 FF FE DE B6 FF 00 80 68 35 -- 06DF50
45 8B E0 62 3E C5 2E 00 02 F2 46 C7 0C C4 83 00 -- 06DF60
83 00 64 4E E3 9A 35 FF 02 75 FF 0D 74 05 0B 02 -- 06DF70
89 05 89 E0 62 3E C5 2E 12 56 8B 10 46 8B 04 C4 -- 06DF80
83 00 64 4E E3 9A FE DC B6 FF FE DE B6 FF 02 55 -- 06DF90
74 16 46 0B 18 46 8B 00 01 F2 46 C7 05 EB 04 C4 -- 06DFA0
86 89 04 C4 83 00 64 4E A1 9A 04 90 68 01 6A 69 -- 06DFB0
18 76 FF 50 00 90 05 52 57 56 FE DE 96 89 FE DC -- 06DFC0
3E C5 2E 5E 5F 00 5C FE EC 9A 04 00 68 16 76 FF -- 06DFD0
35 FF 02 75 FF DF DC 3E C5 2E 00 08 05 C7 E0 5E -- 06DFE0
B6 FF FE DE B6 FF 00 80 68 35 FF E0 5E 3E C5 2E -- 06DFF0
FE DE B6 FF 0C C4 83 00 64 3C 51 9A FE DC 01 FE -- 06E000
FF 1A 7E C5 04 C4 83 00 64 4E E3 9A FE DC B6 FF -- 06E010
FE 56 89 FC 46 89 02 C4 83 00 64 5D 04 9A 06 75 -- 06E020
C5 2E E0 D1 DF E8 3E F7 2E 99 02 45 8B 1A 7E C5 -- 06E030
05 E0 D1 02 45 8B 1A 7E C5 01 6A 05 89 E0 5E 3E -- 06E040
89 FE DC 86 89 04 C4 83 00 64 4E A1 9A 50 00 90 -- 06E050
69 7D F4 46 3B F0 46 8B 00 00 F0 46 C7 FE DE 96 -- 06E060
5D 04 9A 35 FF FE 5E 8E FC 7E 03 E7 D1 F0 7E 8B -- 06E070
DE B6 FF 57 56 FA 56 89 F8 46 89 02 C4 83 00 64 -- 06E080
1A 7E C5 F8 76 FF 52 50 00 90 05 FE DC 86 8B FE -- 06E090
3E C5 2E 5E 5F 00 5C FE EC 9A 50 E0 D1 02 45 8B -- 06E0A0
80 68 35 FF E0 5E 3E C5 2E 35 FF 02 75 FF DF DC -- 06E0B0
C4 83 00 64 3C 51 9A FE DC B6 FF FE DE B6 FF 00 -- 06E0C0
DC B6 FF FE DE B6 FF 8F EB F2 46 FF F0 46 FF 0C -- 06E0D0
CB 5E 5F C9 F6 46 8B 04 C4 83 00 64 4E E3 9A FE -- 06E0E0
00 00 FC 46 C7 00 00 FA 46 C7 00 01 98 C8 57 56 -- 06E0F0
8D 16 50 FE F8 86 8D 16 57 56 FF FF FF 78 86 C7 -- 06E100
57 56 5E 5F 00 5C FE EC 9A 00 80 68 50 FF 78 86 -- 06E110
46 89 5E 5F 00 5C BF 98 9A 50 FE 46 8D 16 00 6A -- 06E120
68 50 FE 68 86 8D 16 0E 75 FF 0A 7E C5 57 56 F8 -- 06E130
5F 00 64 4B 56 9A 50 FE 46 8D 16 F8 76 FF 00 80 -- 06E140
8D 16 FF 6A F8 76 FF 0E 75 FF 0A 7E C5 57 56 5E -- 06E150
FF 0A 7E C5 57 56 5E 5F 00 64 4A CC 9A 50 FE 46 -- 06E160
46 8D 16 F8 76 FF FA 76 FF FC 76 FF 02 6A 0E 75 -- 06E170
75 FF 0A 7E C5 57 56 5E 5F 00 64 4B 26 9A 50 FE -- 06E180
00 64 4A CC 9A 50 FE 46 8D 16 FF 6A F8 76 FF 0E -- 06E190
2E DF E2 36 FF 2E 0E 75 FF 0A 7E C5 57 56 5E 5F -- 06E1A0
9A 50 FE 46 8D 16 F8 76 FF 00 80 68 DF E0 36 FF -- 06E1B0

76 FF 0E 75 FF 0A 7E C5 57 56 5E 5F 00 64 4B 56 -- 06E1C0
56 5E 5F 00 64 4A CC 9A 50 FE 46 8D 16 FF 6A F8 -- 06E1D0
5E 5F 00 5C BF 78 9A 50 FE 46 8D 16 F8 76 FF 57 -- 06E1E0
C5 2E 00 00 02 45 C7 00 00 05 C7 DF C8 3E C5 2E -- 06E1F0
8B 55 57 56 CB 5E 5F C9 FF 05 C6 DF D4 3E 01 FE -- 06E200
C7 E0 6A 3E C5 2E 00 01 05 C7 E0 66 3E C5 2E EC -- 06E210
```

488

```
EO 72 3E C5 2E 02 05 C6 EO 6E 3E C5 2E 00 16 05 -- 06E220
00 02 45 C7 00 00 05 C7 EO 76 3E C5 2E 01 05 C6 -- 06E230
36 FF 2E EO 7E 36 FF 2E EO 80 36 FF 2E 54 6A 00 -- 06E240
2E 0A C4 83 00 5C ED 6E 9A EO 7A 36 FF 2E EO 7C -- 06E250
C4 83 00 64 2A 68 9A EO 82 36 FF 2E EO 84 36 FF -- 06E260
36 FF 2E EO 66 36 FF 2E EO 68 36 FF 2E 12 6A 04 -- 06E270
7A 36 FF 2E EO 7C 36 FF 2E EO 82 36 FF 2E EO 84 -- 06E280
EO 88 36 FF 2E 50 52 0C C4 83 00 5C 94 8D 9A EO -- 06E290
3E C5 2E 0A C4 83 00 5C ED 6E 9A EO 86 36 FF 2E -- 06E2A0
FF 00 6A 00 6A 00 6A 00 6A 14 74 00 3D 83 EO 8A -- 06E2B0
EO 86 3E C5 2E 1E EB 0A C4 83 00 64 28 52 9A 35 -- 06E2C0
52 02 55 89 05 89 EO 8E 3E C5 2E 02 55 8B 05 8B -- 06E2D0
55 57 56 CB 5E 5F C9 04 C4 83 00 44 C5 89 9A 50 -- 06E2E0
EO 96 3E C5 2E 00 01 05 C7 EO 92 3E C5 2E EC 8B -- 06E2F0
9E 3E C5 2E 02 05 C6 EO 9A 3E C5 2E 00 16 05 C7 -- 06E300
02 45 C7 00 00 05 C7 EO A2 3E C5 2E 01 05 C6 EO -- 06E310
FF 2E EO 7E 36 FF 2E EO 80 36 FF 2E 54 6A 00 00 -- 06E320
0A C4 83 00 5C ED 6E 9A EO 7A 36 FF 2E EO 7C 36 -- 06E330
83 00 64 2A 68 9A EO A6 36 FF 2E EO A8 36 FF 2E -- 06E340
FF 2E EO 92 36 FF 2E EO 94 36 FF 2E 12 6A 04 C4 -- 06E350
36 FF 2E EO 7C 36 FF 2E EO A6 36 FF 2E EO A8 36 -- 06E360
AC 36 FF 2E 50 52 0C C4 83 00 5C 94 8D 9A EO 7A -- 06E370
C5 2E 0A C4 83 00 5C ED 6E 9A EO AA 36 FF 2E EO -- 06E380
00 6A 00 6A 00 6A 00 6A 14 74 00 3D 83 EO AE 3E -- 06E390
AA 3E C5 2E 1E EB 0A C4 83 00 64 28 52 9A 35 FF -- 06E3A0
02 55 89 05 89 EO B2 3E C5 2E 02 55 8B 05 8B EO -- 06E3B0
57 56 CB 5E 5F C9 04 C4 83 00 44 C6 0A 9A 50 52 -- 06E3C0
8B 55 57 56 CB 5E 5F C9 00 44 C5 50 9A EC 8B 55 -- 06E3D0
FF EO B6 3E C5 2E EC 8B 55 57 56 CB 5E 5F C9 EC -- 06E3E0
C4 36 FF 2E 00 00 05 C7 04 7E 00 01 3D 05 8B 05 -- 06E3F0
C1 05 8B EO B6 3E C5 2E EO C2 36 FF 2E EO 01 FE -- 06E400
C5 2E 50 52 EO CO 16 8B 2E EO BE 06 03 2E 03 EO -- 06E410
83 00 64 3D BA 9A 01 35 68 03 6A 35 FF EO BA 3E -- 06E420
B6 3E C5 2E 2C 74 00 3D 83 EO C2 3E C5 2E 0E C4 -- 06E430
3E C5 2E 01 41 E9 03 74 FF FF 3D 05 8B 0D FF EO -- 06E440
B6 3E C5 2E 01 32 E9 03 75 FF FF 3D 05 8B EO C6 -- 06E450
36 FF 2E EO C4 36 FF 2E 01 26 E9 00 01 05 C7 EO -- 06E460
2E 03 EO C1 05 8B EO B6 3E C5 2E 0A 76 FF EO C2 -- 06E470
00 44 CA 0F 9A 50 52 EO CO 16 8B 2E EO BE 06 03 -- 06E480
FF 04 75 FF FF 3D 05 8B EO C6 3E C5 2E 0A C4 83 -- 06E490
3E C5 2E EO C2 36 FF 2E EO C4 36 FF 2E 7C EB 05 -- 06E4A0
CO 1E 8E 2E EO BE 3E 03 2E 03 E7 C1 3D 8B EO C6 -- 06E4B0
3E 03 2E 03 E7 C1 3D 8B EO C6 3E C5 2E 35 FF EO -- 06E4C0
FF EO BA 3E C5 2E 06 75 FF EO CO 1E 8E 2E EO BE -- 06E4D0
C5 2E 0E C4 83 00 64 3D BA 9A 01 37 68 03 6A 35 -- 06E4E0
00 6A 00 6A 00 6A 00 6A 15 74 00 3D 83 EO C2 3E -- 06E4F0
3E C5 2E 00 81 E9 0A C4 83 00 64 28 52 9A 35 FF -- 06E500
83 00 00 05 C7 04 7E 00 01 3D 05 8B 05 FF EO C6 -- 06E510
2E EO C2 36 FF 2E EO C4 36 FF 2E 69 75 01 0A 7E -- 06E520
8E 2E EO BE 3E 03 2E 03 E7 C1 3D 8B EO B6 3E C5 -- 06E530
2E 03 E7 C1 3D 8B EO B6 3E C5 2E 35 FF EO CO 1E -- 06E540
BA 3E C5 2E 06 75 FF EO CO 1E 8E 2E EO BE 3E 03 -- 06E550

0E C4 83 00 64 3D BA 9A 01 37 68 03 6A 35 FF EO -- 06E560
FF FF B8 FF 7B E9 03 74 00 3D 83 EO C2 3E C5 2E -- 06E570
5F C9 05 89 EO C6 3E C5 2E 05 89 EO B6 3E C5 2E -- 06E580
86 C7 C8 00 FF 48 86 C7 00 00 EO C8 57 56 CB 5E -- 06E590
00 00 FF 28 86 C7 00 00 FF 26 86 C7 00 00 FF 2A -- 06E5A0
36 FF 2E 0A 76 FF 75 74 00 3D 83 EO CA 3E C5 2E -- 06E5B0
C5 06 C4 83 00 5C 97 1E 9A EO CE 36 FF 2E EO DO -- 06E5C0
```

```
9A  EO  D2  36  FF  2E  EO  D4  36  FF  2E  16  75  FF  10  7E  --  06E5D0
36  FF  2E  12  75  FF  10  7E  C5  06  C4  83  00  5C  97  1E  --  06E5E0
C5  06  C4  83  00  5C  97  1E  9A  EO  D6  36  FF  2E  EO  D8  --  06E5F0
DA  36  FF  2E  EO  DC  36  FF  2E  14  75  FF  10  7E  01  FE  --  06E600
2E  10  75  FF  10  7E  C5  06  C4  83  00  5C  97  1E  9A  EO  --  06E610
C4  83  00  5C  97  1E  9A  EO  DE  36  FF  2E  EO  EO  36  FF  --  06E620
C6  02  DC  46  C6  00  16  DA  46  C7  00  01  D8  46  C7  06  --  06E630
FF  4A  86  89  02  EO  C1  10  45  8B  10  7E  C5  01  DD  46  --  06E640
FF  4A  86  8B  50  52  99  C7  8B  47  12  7C  8B  10  76  8B  --  06E650
56  89  DE  46  89  08  C4  83  00  5C  EE  DC  9A  50  52  99  --  06E660
6E  9A  50  84  46  8D  16  OC  76  FF  OE  76  FF  54  6A  EO  --  06E670
16  76  FF  50  D8  46  8D  16  12  6A  OA  C4  83  00  5C  ED  --  06E680
OC  C4  83  00  5C  94  8D  9A  50  84  46  8D  16  14  76  FF  --  06E690
83  OA  C4  83  00  5C  ED  6E  9A  50  E2  46  8D  16  50  52  --  06E6A0
FO  76  FF  00  6A  00  6A  00  6A  00  6A  16  74  00  FO  7E  --  06E6B0
56  8B  E2  46  8B  04  CD  E9  OA  C4  83  00  64  28  52  9A  --  06E6C0
05  FF  48  86  03  FF  4A  86  8B  F6  56  89  F4  46  89  E4  --  06E6D0
FF  4A  86  8B  FF  4E  86  89  FF  4A  B6  F7  D2  2B  FF  FF  --  06E6E0
C7  8B  00  90  C7  81  FF  4A  BE  03  F8  8B  FF  4E  A6  F7  --  06E6F0
83  00  90  05  01  6A  FF  24  96  89  FF  22  86  89  D2  2B  --  06E700
89  FF  40  86  89  04  C4  83  00  64  4E  A1  9A  50  00  D2  --  06E710
00  90  05  FF  24  96  8B  FF  22  86  8B  01  6A  FF  42  96  --  06E720
FF  44  86  89  04  C4  83  00  64  4E  A1  9A  50  00  D2  83  --  06E730
86  8B  OA  74  FF  40  86  OB  FF  42  86  8B  FF  46  96  89  --  06E740
FF  40  B6  FF  FF  42  B6  FF  2A  75  FF  44  86  OB  FF  46  --  06E750
FF  44  B6  FF  FF  46  B6  FF  04  C4  83  00  64  4E  E3  9A  --  06E760
E9  00  02  05  C7  18  7E  C5  04  C4  83  00  64  4E  E3  9A  --  06E770
42  96  8B  FF  40  86  03  00  90  05  FF  48  86  8B  04  16  --  06E780
00  90  05  FF  48  86  8B  FF  3A  96  89  FF  38  86  89  FF  --  06E790
FF  3E  96  89  FF  3C  86  89  FF  46  96  8B  FF  44  86  03  --  06E7A0
5F  00  5C  BF  98  9A  18  76  FF  1A  76  FF  00  6A  57  56  --  06E7B0
42  B6  FF  20  74  00  3D  83  18  7E  C5  FF  34  86  89  5E  --  06E7C0
46  B6  FF  04  C4  83  00  64  4E  E3  9A  FF  40  B6  FF  FF  --  06E7D0
6A  57  56  03  A8  E9  00  64  4E  E3  9A  FF  44  B6  FF  FF  --  06E7E0
86  89  5E  5F  00  5C  BF  98  9A  18  76  FF  1A  76  FF  00  --  06E7F0
86  89  CO  2B  C3  75  00  3D  83  18  7E  C5  FF  36  01  FE  --  06E800
FF  2C  86  C7  00  00  FF  2E  86  C7  FF  30  86  89  FF  32  --  06E810
57  56  00  00  FF  28  86  C7  00  00  FF  26  86  C7  00  01  --  06E820
5F  00  8C  00  02  9A  34  6A  00  6A  50  FF  50  86  8D  16  --  06E830
FC  46  89  16  45  8B  F8  46  89  12  45  8B  10  7E  C5  5E  --  06E840
7E  83  FA  46  89  48  FC  46  03  FF  4E  86  8B  FE  46  89  --  06E850
45  8B  10  76  C4  FF  50  86  89  14  45  8B  13  75  00  OA  --  06E860
8B  EO  E2  3E  C5  2E  10  76  C4  2B  EB  10  44  03  26  14  --  06E870
89  10  45  8B  10  7E  C5  FF  50  86  89  14  44  03  26  05  --  06E880
86  03  14  44  03  26  05  8B  EO  E2  3E  C5  2E  FF  20  86  --  06E890
FA  46  3B  FE  46  03  F8  46  8B  FF  52  86  89  48  FF  20  --  06E8A0
89  FC  46  8B  FA  46  89  48  F8  46  03  FE  46  8B  OA  7D  --  06E8B0
FC  46  2B  FA  46  8B  FF  56  86  89  FA  46  8B  FF  54  86  --  06E8C0
03  E7  D1  FF  2E  BE  8B  FF  4C  86  89  FF  4A  AE  F7  40  --  06E8D0
7E  C5  57  56  40  75  00  01  3D  FF  30  85  8B  1F  16  FD  --  06E8E0
B5  FF  1F  16  FD  03  E7  D1  FF  2E  BE  8B  OE  75  FF  F4  --  06E8F0

5F  00  64  4A  CC  9A  18  76  FF  1A  76  FF  FF  6A  FF  34  --  06E900
FF  2E  BE  8B  02  7E  E9  03  74  00  3D  83  18  7E  C5  5E  --  06E910
FF  2A  BE  83  00  00  FF  30  85  C7  1F  16  FD  03  E7  D1  --  06E920
1F  16  FD  03  02  E7  C1  FF  2E  BE  8B  57  56  37  7E  00  --  06E930
FF  2C  BE  8B  50  00  90  05  FF  40  85  8B  FF  42  B5  FF  --  06E940
FF  FF  38  B5  FF  FF  3A  B5  FF  1F  16  FD  03  02  E7  C1  --  06E950
18  76  FF  1A  76  FF  5E  5F  00  5C  FE  EC  9A  FF  2A  B6  --  06E960
E7  C1  FF  2E  BE  8B  50  FF  50  86  8D  16  00  6A  00  6A  --  06E970
```

490

```
FF  40  85  03  00  90  05  FF  2A  86  8B  1F  16  FD  03  02  --  06E980
83  00  54  5C  A2  9A  03  6A  13  6A  50  52  FF  42  95  8B  --  06E990
FF  28  B6  FF  02  6A  0E  75  FF  F4  7E  C5  57  56  14  C4  --  06E9A0
B5  FF  1F  16  FD  03  E7  D1  FF  2E  BE  8B  FF  26  B6  FF  --  06E9B0
C5  5E  5F  00  64  4B  26  9A  18  76  FF  1A  76  FF  FF  34  --  06E9C0
FF  F4  7E  C5  57  56  01  C0  E9  03  74  00  3D  83  18  7E  --  06E9D0
FF  34  B5  FF  1F  16  FD  03  E7  D1  FF  2E  BE  8B  0E  75  --  06E9E0
C5  5E  5F  00  64  4A  CC  9A  18  76  FF  1A  76  FF  FF  6A  --  06E9F0
7E  C5  57  56  01  90  E9  03  74  00  3D  83  18  7E  01  FE  --  06EA00
FF  1F  16  FD  03  02  E7  C1  FF  2E  BE  8B  0E  75  FF  F4  --  06EA10
D1  FF  2E  BE  8B  FF  48  B6  FF  FF  40  B5  FF  FF  42  B5  --  06EA20
9A  18  76  FF  1A  76  FF  FF  34  B5  FF  1F  16  FD  03  E7  --  06EA30
4B  E9  03  74  00  3D  83  18  7E  C5  5E  5F  00  64  4B  56  --  06EA40
01  FF  30  85  C7  1F  16  FD  03  E7  D1  FF  2E  BE  8B  01  --  06EA50
05  75  00  FF  2E  BE  83  FF  2C  86  89  FF  2E  86  8B  00  --  06EA60
2B  FF  48  86  8B  FF  2E  86  89  C0  2B  02  EB  00  01  B8  --  06EA70
FC  46  89  40  FA  46  8B  FF  28  96  11  FF  26  86  01  D2  --  06EA80
03  FF  2A  86  8B  FA  46  89  48  FC  46  03  FF  4E  86  8B  --  06EA90
7E  FF  4A  86  3B  FF  2A  86  89  FF  48  86  2B  FF  4C  86  --  06EAA0
46  3B  FE  46  03  F8  46  8B  FA  46  89  48  FA  46  8B  07  --  06EAB0
1F  16  FD  03  E7  D1  FF  2E  BE  8B  FD  E3  E9  03  7E  FC  --  06EAC0
75  FF  F4  7E  C5  57  56  30  75  00  01  3D  FF  30  85  8B  --  06EAD0
6A  FF  34  B5  FF  1F  16  FD  03  E7  D1  FF  2E  BE  8B  0E  --  06EAE0
7E  C5  5E  5F  00  64  4A  CC  9A  18  76  FF  1A  76  FF  FF  --  06EAF0
03  E7  D1  FF  2C  BE  8B  00  93  E9  03  74  00  3D  83  18  --  06EB00
7E  C5  57  56  2D  75  00  01  3D  FF  30  85  8B  1F  16  FD  --  06EB10
B5  FF  1F  16  FD  03  E7  D1  FF  2C  BE  8B  0E  75  FF  F4  --  06EB20
5F  00  64  4A  CC  9A  18  76  FF  1A  76  FF  FF  6A  FF  34  --  06EB30
40  B6  FF  FF  42  B6  FF  53  75  00  3D  83  18  7E  C5  5E  --  06EB40
44  B6  FF  FF  46  B6  FF  04  C4  83  00  64  4E  E3  9A  FF  --  06EB50
FF  FF  34  B6  FF  57  56  04  C4  83  00  64  4E  E3  9A  FF  --  06EB60
B6  FF  57  56  5E  5F  00  5C  BF  78  9A  18  76  FF  1A  76  --  06EB70
16  5E  5F  00  5C  BF  78  9A  18  76  FF  1A  76  FF  FF  36  --  06EB80
CB  5E  5F  C9  04  C4  83  00  5C  94  D5  9A  50  E2  46  8D  --  06EB90
00  00  8A  46  C7  C8  00  A8  46  C7  00  00  82  C8  57  56  --  06EBA0
83  E0  CA  3E  C5  2E  00  00  88  46  C7  00  00  86  46  C7  --  06EBB0
E6  36  FF  2E  E0  E8  36  FF  2E  0A  76  FF  75  74  00  3D  --  06EBC0
2E  16  75  FF  14  7E  C5  06  C4  83  00  5C  97  1E  9A  E0  --  06EBD0
C4  83  00  5C  97  1E  9A  E0  EA  36  FF  2E  E0  EC  36  FF  --  06EBE0
EE  36  FF  2E  E0  F0  36  FF  2E  12  75  FF  14  7E  C5  06  --  06EBF0
75  FF  14  7E  C5  06  C4  83  00  5C  97  1E  9A  E0  01  FE  --  06EC00
00  5C  97  1E  9A  E0  F2  36  FF  2E  E0  F4  36  FF  2E  14  --  06EC10
FF  2E  E0  F8  36  FF  2E  10  75  FF  14  7E  C5  06  C4  83  --  06EC20
45  8B  14  7E  C5  06  C4  83  00  5C  97  1E  9A  E0  F6  36  --  06EC30
F7  D2  2B  FF  70  05  A8  46  8B  B4  46  89  02  E0  C1  10  --  06EC40
00  90  05  B4  46  03  B4  6E  F7  40  40  B2  46  89  B4  76  --  06EC50
02  9A  34  6A  00  6A  50  B6  46  8D  16  57  56  B0  46  89  --  06EC60
45  8B  14  7E  C5  15  75  00  0A  7E  83  5E  5F  00  8C  00  --  06EC70
2A  EB  10  44  03  26  14  45  8B  14  76  C4  B6  46  89  14  --  06EC80
46  89  14  44  03  26  05  8B  E0  E2  3E  C5  2E  14  76  C4  --  06EC90

E0  E2  3E  C5  2E  FF  7E  86  89  10  45  8B  14  7E  C5  B6  --  06ECA0
12  6A  B8  46  89  48  FF  7E  86  03  14  44  03  26  05  8B  --  06ECB0
0C  76  FF  0E  76  FF  10  76  FF  12  76  FF  01  6A  16  6A  --  06ECC0
9A  50  EA  46  8D  16  50  52  0C  C4  83  00  5C  93  FD  9A  --  06ECD0
0B  05  89  1C  7E  C5  F8  46  8B  0A  C4  83  00  5C  ED  6E  --  06ECE0
89  FC  46  89  EC  56  8B  EA  46  8B  04  B4  E9  03  74  C0  --  06ECF0
76  FF  57  1E  76  FF  20  74  18  46  0B  1A  46  8B  FE  56  --  06ED00
C5  0A  C4  83  00  44  DE  C0  9A  0A  76  FF  18  76  FF  1A  --  06ED10
05  B0  46  8B  01  6A  04  80  E9  03  74  00  3D  83  1C  7E  --  06ED20
```

```
56 89 A0 46 89 04 C4 83 00 64 4E A1 9A 50 00 90 -- 06ED30
83 00 64 4E A1 9A 50 00 90 05 B0 46 8B 01 6A A2 -- 06ED40
08 74 A0 46 0B A2 46 00 8B A6 56 89 A4 46 89 04 C4 -- 06ED50
E3 9A A0 76 FF A2 76 FF 26 75 A4 46 0B A6 46 8B -- 06ED60
64 4E E3 9A A4 76 FF A6 76 FF 04 C4 83 00 64 4E -- 06ED70
46 8B 04 1C E9 00 02 05 C7 1C 7E C5 04 C4 83 00 -- 06ED80
A4 46 8B 9A 56 89 98 46 89 00 90 05 A2 56 8B A0 -- 06ED90
00 6A 57 56 9E 56 89 9C 46 89 00 90 05 A6 56 8B -- 06EDA0
94 46 89 5E 5F 00 5C BF 98 9A 1C 76 FF 1E 76 FF -- 06EDB0
E3 9A A0 76 FF A2 76 FF 1C 74 00 3D 83 1C 7E C5 -- 06EDC0
64 4E E3 9A A4 76 FF A6 76 FF 04 C4 83 00 64 4E -- 06EDD0
98 9A 1C 76 FF 1E 76 FF 00 6A 57 56 03 C3 E9 00 -- 06EDE0
C8 75 00 3D 83 1C 7E C5 96 46 89 5E 5F 00 5C BF -- 06EDF0
00 8E 46 C7 00 00 92 46 C7 00 01 90 46 C7 01 FE -- 06EE00
00 00 88 46 C7 00 00 86 46 C7 00 01 8C 46 C7 00 -- 06EE10
86 76 FF 88 76 FF 02 6A 0E 75 FF FC 7E C5 57 56 -- 06EE20
FF 1E 76 FF 94 75 FF 1F 16 FD 03 E7 D1 8E 7E 8B -- 06EE30
74 00 3D 83 1C 7E C5 5E 5F 00 64 4B 26 9A 1C 76 -- 06EE40
D1 8E 7E 8B 0E 75 FF FC 7E C5 57 56 03 58 E9 03 -- 06EE50
1C 76 FF 1E 76 FF FF 6A 94 75 FF 1F 16 FD 03 E7 -- 06EE60
E9 03 74 00 3D 83 1C 7E C5 5E 5F 00 64 4A CC 9A -- 06EE70
02 E7 C1 8E 7E 8B 0E 75 FF FC 7E C5 57 56 03 2A -- 06EE80
8E 7E 8B A8 76 FF A0 75 FF A2 75 FF 1F 16 FD 03 -- 06EE90
9A 1C 76 FF 1E 76 FF 94 75 FF 1F 16 FD 03 E7 D1 -- 06EEA0
7E C5 14 76 C4 00 90 80 46 C7 5E 5F 00 64 4A F6 -- 06EEB0
89 16 45 8B AE 46 89 48 12 44 03 26 16 45 8B 14 -- 06EEC0
B2 46 8B 88 56 11 86 46 01 D2 2B A8 46 8B AC 46 -- 06EED0
FF 03 7E B4 46 3B 8A 46 8B AA 46 89 48 AC 46 03 -- 06EEE0
AA 46 89 AE 46 8B 06 7E AE 46 3B AA 46 8B AA 46 -- 06EEF0
75 00 01 3D 90 45 8B 1F 16 FD 03 E7 D1 8E 7E 8B -- 06EF00
FD 03 E7 D1 8E 7E 8B 0E 75 FF FC 7E C5 57 56 3C -- 06EF10
4A CC 9A 1C 76 FF 1E 76 FF FF 6A 94 75 FF 1F 16 -- 06EF20
8B 02 6D E9 03 74 00 3D 83 1C 7E C5 5E 5F 00 64 -- 06EF30
8A 7E 83 00 00 90 45 C7 1F 16 FD 03 E7 D1 8E 7E -- 06EF40
FF 1F 16 FD 03 02 E7 C1 8E 7E 8B 57 56 31 7E 00 -- 06EF50
8B 1F 16 FD 03 02 E7 C1 8C 7E 8B 98 75 FF 9A 75 -- 06EF60
FE EC 9A 8A 76 FF 50 52 9A 55 8B 98 45 03 82 46 -- 06EF70
56 00 EB E9 03 75 AE 46 3B AA 46 8B 5E 5F 00 5C -- 06EF80
8B 86 76 FF 88 76 FF 02 6A 0E 75 FF FC 7E C5 57 -- 06EF90
76 FF 1E 76 FF 94 75 FF 1F 16 FD 03 E7 D1 8C 7E -- 06EFA0
03 74 00 3D 83 1C 7E C5 5E 5F 00 64 4B 26 9A 1C -- 06EFB0
8B D8 8B 99 AC 46 8B 50 52 99 B4 46 8B 01 E9 E9 -- 06EFC0
52 00 D2 83 00 01 05 D1 1B C3 2B 99 AA 46 8B CA -- 06EFD0
8B 84 56 89 82 46 89 08 C4 83 00 5C EE DC 9A 50 -- 06EFE0
89 84 56 1B 82 46 2B D2 2B C7 8B A8 7E 03 8A 7E -- 06EFF0
D1 8C 7E 8B 0E 75 FF FC 7E C5 57 56 8A 46 01 FE -- 06F000
1C 76 FF 1E 76 FF FF 6A 94 75 FF 1F 16 FD 03 E7 -- 06F010
E9 03 74 00 3D 83 1C 7E C5 5E 5F 00 64 4A CC 9A -- 06F020
02 E7 C1 8C 7E 8B 0E 75 FF FC 7E C5 57 56 01 7C -- 06F030

00 90 2D 9A 55 8B 98 45 03 8A 46 8B 1F 16 FD 03 -- 06F040
75 FF 1F 16 FD 03 E7 D1 8C 7E 8B A8 76 FF 50 52 -- 06F050
7E 8B 5E 5F 00 64 4A F6 9A 1C 76 FF 1E 76 FF 94 -- 06F060
89 AC 46 8B 00 01 90 45 C7 1F 16 FD 03 E7 D1 8C -- 06F070
00 6A 1C 76 FF 1E 76 FF BC 46 89 AA 46 8B BA 46 -- 06F080
16 FD 03 02 E7 C1 8E 7E 8B 50 B6 46 8D 16 00 6A -- 06F090
00 54 5C A2 9A 04 6A 13 6A 98 75 FF 9A 75 FF 1F -- 06F0A0
B8 05 75 00 8E 7E 83 8C 46 89 8E 46 8B 14 C4 83 -- 06F0B0
46 01 D2 2B A8 46 8B 8E 46 89 C0 2B 02 EB 00 01 -- 06F0C0
46 3B AA 46 8B AC 46 89 40 AA 46 8B 88 56 11 86 -- 06F0D0
```

```
8B 1F 16 FD 03 E7 D1 8E 7E 8B FD F9 E9 03 7D AE -- 06F0E0
8B 0E 75 FF FC 7E C5 57 56 2E 75 00 01 3D 90 45 -- 06F0F0
1E 76 FF FF 6A 94 75 FF 1F 16 FD 03 E7 D1 8E 7E -- 06F100
00 3D 83 1C 7E C5 5E 5F 00 64 4A CC 9A 1C 76 FF -- 06F110
45 8B 1F 16 FD 03 E7 D1 8C 7E 8B 00 89 E9 03 74 -- 06F120
7E 8B 0E 75 FF FC 7E C5 57 56 2B 75 00 01 3D 90 -- 06F130
FF 1E 76 FF FF 6A 94 75 FF 1F 16 FD 03 E7 D1 8C -- 06F140
75 00 3D 83 1C 7E C5 5E 5F 00 64 4A CC 9A 1C 76 -- 06F150
FF 04 C4 83 00 64 4E E3 9A A0 76 FF A2 76 FF 4D -- 06F160
FF 57 56 04 C4 83 00 64 4E E3 9A A4 76 FF A6 76 -- 06F170
56 5E 5F 00 5C BF 78 9A 1C 76 FF 1E 76 FF 94 76 -- 06F180
5F 00 5C BF 78 9A 1C 76 FF 1E 76 FF 96 76 FF 57 -- 06F190
5F C9 04 C4 83 00 5C 94 D5 9A 50 EA 46 8D 16 5E -- 06F1A0
0C 7E C5 C8 00 C2 46 C7 00 00 46 C8 57 56 CB 5E -- 06F1B0
76 F7 D2 2B C2 46 8B C6 46 89 02 E0 C1 10 45 8B -- 06F1C0
0C 76 C4 C2 46 89 C4 6E F7 C6 46 8B C4 46 89 C6 -- 06F1D0
46 89 16 45 8B C0 46 89 48 12 44 03 26 16 45 8B -- 06F1E0
14 45 8B C8 46 89 14 45 8B 0F 75 00 0A 7E 83 BE -- 06F1F0
E0 E2 3E C5 2E 0C 76 C4 28 EB 10 44 03 26 01 FE -- 06F200
89 10 45 8B 0C 7E C5 C8 46 89 14 44 03 26 05 8B -- 06F210
BA 46 03 14 44 03 26 05 8B E0 E2 3E C5 2E BA 46 -- 06F220
C4 83 00 64 4E A1 9A C2 76 FF 01 6A CA 46 89 48 -- 06F230
05 C7 10 7E C5 09 75 C2 0B FE 56 89 FC 46 89 04 -- 06F240
C0 46 3B BC 46 89 BE 46 03 C4 46 8B 64 EB 00 02 -- 06F250
8B CC 46 89 BE 46 8B BC 46 89 40 C0 46 8B 07 7E -- 06F260
00 6A 00 6A 10 76 FF 12 76 FF CE 46 89 48 BC 46 -- 06F270
9A 04 6A 13 6A FC 76 FF FE 76 FF 50 C8 46 8D 16 -- 06F280
8B 0B 75 00 3D 83 10 7E C5 14 C4 83 00 54 5C A2 -- 06F290
FC 76 FF FE 76 FF AA 7E C0 46 3B BE 46 89 BC 46 -- 06F2A0
00 6C 01 84 CB 5E 5F C9 04 C4 83 00 64 4E E3 9A -- 06F2B0
00 6C 01 82 00 6C 01 80 00 6C 01 8A 00 6C 01 88 -- 06F2C0
01 9A 00 80 00 6C 01 96 00 6C 02 A4 00 6C 01 92 -- 06F2D0
02 1C 00 6C 02 36 00 6C 16 5E 00 6C 02 1A 00 6C -- 06F2E0
02 2A 00 6C 02 22 00 6C 02 20 00 6C 02 1E 00 6C -- 06F2F0
00 6C 02 34 00 02 00 3C B3 28 00 6C 02 32 00 6C -- 06F300
00 6C 01 A0 00 6C 01 9E 00 6C 01 9C 00 6C 02 3B -- 06F310
00 6C 02 A0 00 6C 02 9A 00 6C 02 9C 00 6C 02 42 -- 06F320
00 6C 02 38 00 6C 02 46 00 6C 02 44 00 6C 30 DE -- 06F330
02 3C 00 3C A6 B0 00 3C A6 AC 00 6C 02 3A 00 06 -- 06F340
03 B6 00 6C 03 B4 00 6C 03 CA 00 6C 01 8C 00 6C -- 06F350
16 82 00 6C 03 BA 00 6C 03 B9 00 6C 03 B8 00 6C -- 06F360
A8 10 00 3C A8 02 00 3C A7 F0 00 3C 86 A2 00 6C -- 06F370
03 C2 00 6C 03 C0 00 6C 03 BE 00 3C A7 EC 00 3C -- 06F380
A8 2A 00 3C A8 18 00 6C 03 C4 00 6C 03 C3 00 6C -- 06F390
F5 A4 00 6C 01 8E 00 3C A8 14 00 3C A8 38 00 3C -- 06F3A0
AE 5C 00 6C 01 90 00 6C 03 C8 00 6C 03 CE 00 3C -- 06F3B0
00 72 00 6C 00 51 00 6C 00 2B 00 6C 00 00 00 3C -- 06F3C0
00 EB 00 6C 00 BF 00 6C 17 DA 00 6C 00 9B 00 6C -- 06F3D0

57 56 00 6C 01 5B 00 6C 01 32 00 6C 01 11 00 6C -- 06F3E0
03 EB 00 00 FE 46 C7 00 5C 9F BF 9A 00 00 02 C8 -- 06F3F0
E7 D1 FE 7E 8B 1E 7D 04 FE 7E 83 FE 46 FF 01 FE -- 06F400
9A FE 76 FF 35 FF FB B6 1E 8E 2E FB B4 3E 03 2E -- 06F410
03 EB 00 05 FE 46 C7 D9 EB 04 C4 83 00 5C A0 8C -- 06F420
03 2E E7 D1 FE 7E 8B 1E 7D 09 FE 7E 83 FE 46 FF -- 06F430
A0 8C 9A FE 76 FF 35 FF FB B6 1E 8E 2E FB B4 3E -- 06F440
00 01 05 C7 FB B8 3E C5 2E D9 EB 04 C4 83 00 5C -- 06F450
C5 2E 00 5C A1 1C 9A EC 8B 55 57 56 CB 5E 5F C9 -- 06F460
00 04 C8 57 56 CB 5E 5F C9 00 00 05 C7 FB B8 3E -- 06F470
EB 00 00 FE 46 C7 00 01 05 C7 FB BC 3E C5 2E 00 -- 06F480
```

```
2E E7 D1 FE 7E 8B 15 74 0A FE 7E 83 FE 46 FF 03 -- 06F490
C7 E2 EB 00 32 05 C7 FB B6 1E 8E 2E FB B4 3E 03 -- 06F4A0
8B 1B 7D 09 FE 7E 83 FE 46 FF 03 EB 00 00 FE 46 -- 06F4B0
9B FB C2 1E 8E 2E FB C0 3E 03 2E 02 E7 C1 FE 7E -- 06F4C0
2E 50 FC 46 8D 16 DC EB 1D D9 9B FB C4 06 DD 2E -- 06F4D0
36 FF 2E 50 00 14 05 FB C0 06 8B 2E FB C2 36 FF -- 06F4E0
C7 0C C4 83 00 1C 7F 5C 9A FB C0 36 FF 2E FB C2 -- 06F4F0
8B 1E 7D 04 FE 7E 83 FE 46 FF 03 EB 00 00 FE 46 -- 06F500
35 FF FB B6 1E 8E 2E FB B4 3E 03 2E E7 D1 FE 7E -- 06F510
FE 46 C7 D9 EB 04 C4 83 00 5C A0 8C 9A FE 76 FF -- 06F520
FE 7E 8B 1E 7D 09 FE 7E 83 FE 46 FF 03 EB 00 05 -- 06F530
76 FF 35 FF FB B6 1E 8E 2E FB B4 3E 03 2E E7 D1 -- 06F540
CB 5E 5F C9 9B D9 EB 04 C4 83 00 5C A0 8C 9A FE -- 06F550
5F C9 00 00 05 C7 FB BC 3E C5 2E EC 8B 55 57 56 -- 06F560
74 00 3D 83 FB BC 3E C5 2E EC 8B 55 57 56 CB 5E -- 06F570
C4 83 00 44 F1 8A 9A 00 6A 00 6A 05 6A 00 6A 12 -- 06F580
EE E8 9A 00 6A 00 6A 00 6A 05 6A 00 6A 12 EB 08 -- 06F590
C5 2E EC 8B 55 57 56 CB 5E 5F C9 0A C4 83 00 44 -- 06F5A0
00 6A 00 6A 05 6A 01 6A 12 74 00 3D 83 FB BC 3E -- 06F5B0
00 6A 05 6A 01 6A 12 EB 08 C4 83 00 44 F1 8A 9A -- 06F5C0
CB 5E 5F C9 0A C4 83 00 44 EE E8 9A 00 6A 00 6A -- 06F5D0
6A 12 74 00 3D 83 FB BC 3E C5 2E EC 8B 55 57 56 -- 06F5E0
EB 08 C4 83 00 44 F1 8A 9A 00 6A 00 6A 05 6A 02 -- 06F5F0
EE E8 9A 00 6A 00 6A 00 6A 05 6A 02 6A 12 01 FE -- 06F600
C5 2E EC 8B 55 57 56 CB 5E 5F C9 0A C4 83 00 44 -- 06F610
01 6A 01 6A 06 6A 00 6A 12 74 00 3D 83 FB BC 3E -- 06F620
01 6A 06 6A 00 6A 12 EB 08 C4 83 00 44 F1 8A 9A -- 06F630
CB 5E 5F C9 0A C4 83 00 44 EE E8 9A 01 6A 01 6A -- 06F640
6A 12 74 00 3D 83 FB BC 3E C5 2E EC 8B 55 57 56 -- 06F650
EB 08 C4 83 00 44 F1 8A 9A 01 6A 01 6A 06 6A 01 -- 06F660
00 44 EE E8 9A 01 6A 01 6A 01 6A 06 6A 01 6A 12 -- 06F670
BC 3E C5 2E EC 8B 55 57 56 CB 5E 5F C9 0A C4 83 -- 06F680
8A 9A 01 6A 01 6A 06 6A 02 6A 12 74 00 3D 83 FB -- 06F690
01 6A 01 6A 06 6A 02 6A 12 EB 08 C4 83 00 44 F1 -- 06F6A0
57 56 CB 5E 5F C9 0A C4 83 00 44 EE E8 9A 01 6A -- 06F6B0
6A 00 6A 12 74 00 3D 83 FB BC 3E C5 2E EC 8B 55 -- 06F6C0
6A 12 EB 08 C4 83 00 44 F1 8A 9A 02 6A 02 6A 07 -- 06F6D0
C4 83 00 44 EE E8 9A 02 6A 02 6A 02 6A 07 6A 00 -- 06F6E0
83 FB BC 3E C5 2E EC 8B 55 57 56 CB 5E 5F C9 0A -- 06F6F0
44 F1 8A 9A 02 6A 02 6A 07 6A 01 6A 12 74 00 3D -- 06F700
02 6A 02 6A 02 6A 07 6A 01 6A 12 EB 08 C4 83 00 -- 06F710
8B 55 57 56 CB 5E 5F C9 0A C4 83 00 44 EE E8 9A -- 06F720
6A 07 6A 02 6A 12 74 00 3D 83 FB BC 3E C5 2E EC -- 06F730
6A 02 6A 12 EB 08 C4 83 00 44 F1 8A 9A 02 6A 02 -- 06F740
C9 0A C4 83 00 44 EE E8 9A 02 6A 02 6A 02 6A 07 -- 06F750
00 3D 83 FB BC 3E C5 2E EC 8B 55 57 56 CB 5E 5F -- 06F760
83 00 44 F1 8A 9A 03 6A 03 6A 08 6A 00 6A 12 74 -- 06F770

E8 9A 03 6A 03 6A 03 6A 08 6A 00 6A 12 EB 08 C4 -- 06F780
2E EC 8B 55 57 56 CB 5E 5F C9 0A C4 83 00 44 EE -- 06F790
6A 03 6A 08 6A 01 6A 12 74 00 3D 83 FB BC 3E C5 -- 06F7A0
6A 08 6A 01 6A 12 EB 08 C4 83 00 44 F1 8A 9A 03 -- 06F7B0
5E 5F C9 0A C4 83 00 44 EE E8 9A 03 6A 03 6A 03 -- 06F7C0
12 74 00 3D 83 FB BC 3E C5 2E EC 8B 55 57 56 CB -- 06F7D0
08 C4 83 00 44 F1 8A 9A 03 6A 03 6A 08 6A 02 6A -- 06F7E0
44 EE E8 9A 03 6A 03 6A 03 6A 08 6A 02 6A 12 EB -- 06F7F0
2E EC 8B 55 57 56 CB 5E 5F C9 0A C4 83 00 01 FE -- 06F800
6A 00 6A 05 6A 03 6A 12 74 00 3D 83 FB BC 3E C5 -- 06F810
6A 05 6A 00 6A 12 EB 08 C4 83 00 44 F1 8A 9A 00 -- 06F820
5E 5F C9 0A C4 83 00 44 EE E8 9A 00 6A 05 6A 00 -- 06F830
```

494

```
12 74 00 3D 83 FB BC 3E C5 2E EC 8B 55 57 56 CB -- 06F840
08 C4 83 00 44 F1 8A 9A 00 6A 00 6A 05 6A 04 6A -- 06F850
44 EE E8 9A 00 6A 05 6A 00 6A 05 6A 01 6A 12 EB -- 06F860
3E C5 2E EC 8B 55 57 56 CB 5E 5F C9 0A C4 83 00 -- 06F870
9A 00 6A 00 6A 05 6A 05 6A 12 74 00 3D 83 FB BC -- 06F880
6A 00 6A 05 6A 02 6A 12 EB 08 C4 83 00 44 F1 8A -- 06F890
56 CB 5E 5F C9 0A C4 83 00 44 EE E8 9A 00 6A 05 -- 06F8A0
03 6A 12 74 00 3D 83 FB BC 3E C5 2E EC 8B 55 57 -- 06F8B0
12 EB 08 C4 83 00 44 F1 8A 9A 01 6A 01 6A 06 6A -- 06F8C0
83 00 44 EE E8 9A 01 6A 06 6A 01 6A 06 6A 00 6A -- 06F8D0
FB BC 3E C5 2E EC 8B 55 57 56 CB 5E 5F C9 0A C4 -- 06F8E0
F1 8A 9A 01 6A 01 6A 06 6A 04 6A 12 74 00 3D 83 -- 06F8F0
6A 06 6A 01 6A 06 6A 01 6A 12 EB 08 C4 83 00 44 -- 06F900
55 57 56 CB 5E 5F C9 0A C4 83 00 44 EE E8 9A 01 -- 06F910
06 6A 05 6A 12 74 00 3D 83 FB BC 3E C5 2E EC 8B -- 06F920
02 6A 12 EB 08 C4 83 00 44 F1 8A 9A 01 6A 01 6A -- 06F930
0A C4 83 00 44 EE E8 9A 01 6A 06 6A 01 6A 06 6A -- 06F940
3D 83 FB BC 3E C5 2E EC 8B 55 57 56 CB 5E 5F C9 -- 06F950
00 44 F1 8A 9A 02 6A 02 6A 07 6A 03 6A 12 74 00 -- 06F960
9A 02 6A 07 6A 02 6A 07 6A 00 6A 12 EB 08 C4 83 -- 06F970
EC 8B 55 57 56 CB 5E 5F C9 0A C4 83 00 44 EE E8 -- 06F980
02 6A 07 6A 04 6A 12 74 00 3D 83 FB BC 3E C5 2E -- 06F990
07 6A 01 6A 12 EB 08 C4 83 00 44 F1 8A 9A 02 6A -- 06F9A0
5F C9 0A C4 83 00 44 EE E8 9A 02 6A 07 6A 02 6A -- 06F9B0
74 00 3D 83 FB BC 3E C5 2E EC 8B 55 57 56 CB 5E -- 06F9C0
C4 83 00 44 F1 8A 9A 02 6A 02 6A 07 6A 05 6A 12 -- 06F9D0
EE E8 9A 02 6A 07 6A 02 6A 07 6A 02 6A 12 EB 08 -- 06F9E0
C5 2E EC 8B 55 57 56 CB 5E 5F C9 0A C4 83 00 44 -- 06F9F0
03 6A 08 6A 03 6A 12 74 00 3D 83 FB BC 3E 01 FE -- 06FA00
08 6A 00 6A 12 EB 08 C4 83 00 44 F1 8A 9A 03 6A -- 06FA10
5F C9 0A C4 83 00 44 EE E8 9A 03 6A 08 6A 03 6A -- 06FA20
74 00 3D 83 FB BC 3E C5 2E EC 8B 55 57 56 CB 5E -- 06FA30
C4 83 00 44 F1 8A 9A 03 6A 03 6A 08 6A 04 6A 12 -- 06FA40
EE E8 9A 03 6A 08 6A 03 6A 08 6A 01 6A 12 EB 08 -- 06FA50
C5 2E EC 8B 55 57 56 CB 5E 5F C9 0A C4 83 00 44 -- 06FA60
03 6A 03 6A 08 6A 05 6A 12 74 00 3D 83 FB BC 3E -- 06FA70
03 6A 08 6A 02 6A 12 EB 08 C4 83 00 44 F1 8A 9A -- 06FA80
CB 5E 5F C9 0A C4 83 00 44 EE E8 9A 03 6A 08 6A -- 06FA90
6A 12 74 00 3D 83 FB BC 3E C5 2E EC 8B 55 57 56 -- 06FAA0
EB 08 C4 83 00 44 F1 8A 9A 00 6A 00 6A 05 6A 03 -- 06FAB0
00 44 EE E8 9A 00 6A 00 6A 00 6A 05 6A 03 6A 12 -- 06FAC0
BC 3E C5 2E EC 8B 55 57 56 CB 5E 5F C9 0A C4 83 -- 06FAD0
8A 9A 00 6A 00 6A 05 6A 04 6A 12 74 00 3D 83 FB -- 06FAE0
00 6A 00 6A 05 6A 04 6A 12 EB 08 C4 83 00 44 F1 -- 06FAF0
57 56 CB 5E 5F C9 0A C4 83 00 44 EE E8 9A 00 6A -- 06FB00
6A 05 6A 12 74 00 3D 83 FB BC 3E C5 2E EC 8B 55 -- 06FB10

6A 12 EB 08 C4 83 00 44 F1 8A 9A 00 6A 00 6A 05 -- 06FB20
C4 83 00 44 EE E8 9A 00 6A 00 6A 00 6A 05 6A 05 -- 06FB30
83 FB BC 3E C5 2E EC 8B 55 57 56 CB 5E 5F C9 0A -- 06FB40
44 F1 8A 9A 01 6A 01 6A 06 6A 03 6A 12 74 00 3D -- 06FB50
01 6A 01 6A 01 6A 06 6A 03 6A 12 EB 08 C4 83 00 -- 06FB60
8B 55 57 56 CB 5E 5F C9 0A C4 83 00 44 EE E8 9A -- 06FB70
6A 06 6A 04 6A 12 74 00 3D 83 FB BC 3E C5 2E EC -- 06FB80
6A 04 6A 12 EB 08 C4 83 00 44 F1 8A 9A 01 6A 01 -- 06FB90
C9 0A C4 83 00 44 EE E8 9A 01 6A 01 6A 01 6A 06 -- 06FBA0
00 3D 83 FB BC 3E C5 2E EC 8B 55 57 56 CB 5E 5F -- 06FBB0
83 00 44 F1 8A 9A 01 6A 01 6A 06 6A 05 6A 12 74 -- 06FBC0
E8 9A 01 6A 01 6A 01 6A 06 6A 05 6A 12 EB 08 C4 -- 06FBD0
2E EC 8B 55 57 56 CB 5E 5F C9 0A C4 83 00 44 EE -- 06FBE0
```

495

```
6A 02 6A 07 6A 03 6A 12 74 00 3D 83 FB BC 3E C5 -- 06FBF0
6A 03 6A 12 EB 08 C4 83 00 44 F1 8A 9A 02 01 FE -- 06FC00
C9 0A C4 83 00 44 EE E8 9A 02 6A 02 6A 02 6A 07 -- 06FC10
00 3D 83 FB BC 3E C5 2E EC 8B 55 57 56 CB 5E 5F -- 06FC20
83 00 44 F1 8A 9A 02 6A 02 6A 07 6A 04 6A 12 74 -- 06FC30
E8 9A 02 6A 02 6A 02 6A 07 6A 04 6A 12 EB 08 C4 -- 06FC40
2E EC 8B 55 57 56 CB 5E 5F C9 0A C4 83 00 44 EE -- 06FC50
6A 02 6A 07 6A 05 6A 12 74 00 3D 83 FB BC 3E C5 -- 06FC60
6A 07 6A 05 6A 12 EB 08 C4 83 00 44 F1 8A 9A 02 -- 06FC70
5E 5F C9 0A C4 83 00 44 EE E8 9A 02 6A 02 6A 02 -- 06FC80
12 74 00 3D 83 FB BC 3E C5 2E EC 8B 55 57 56 CB -- 06FC90
08 C4 83 00 44 F1 8A 9A 03 6A 03 6A 08 6A 03 6A -- 06FCA0
44 EE E8 9A 03 6A 03 6A 03 6A 08 6A 03 6A 12 EB -- 06FCB0
3E C5 2E EC 8B 55 57 56 CB 5E 5F C9 0A C4 83 00 -- 06FCC0
9A 03 6A 03 6A 08 6A 04 6A 12 74 00 3D 83 FB BC -- 06FCD0
6A 03 6A 08 6A 04 6A 12 EB 08 C4 83 00 44 F1 8A -- 06FCE0
56 CB 5E 5F C9 0A C4 83 00 44 EE E8 9A 03 6A 03 -- 06FCF0
05 6A 12 74 00 3D 83 FB BC 3E C5 2E EC 8B 55 57 -- 06FD00
12 EB 08 C4 83 00 44 F1 8A 9A 03 6A 03 6A 08 6A -- 06FD10
83 00 44 EE E8 9A 03 6A 03 6A 03 6A 08 6A 05 6A -- 06FD20
FB BC 3E C5 2E EC 8B 55 57 56 CB 5E 5F C9 0A C4 -- 06FD30
F1 8A 9A 00 6A 00 6A 05 6A 00 6A 12 74 00 3D 83 -- 06FD40
6A 05 6A 00 6A 05 6A 03 6A 12 EB 08 C4 83 00 44 -- 06FD50
55 57 56 CB 5E 5F C9 0A C4 83 00 44 EE E8 9A 00 -- 06FD60
05 6A 01 6A 12 74 00 3D 83 FB BC 3E C5 2E EC 8B -- 06FD70
04 6A 12 EB 08 C4 83 00 44 F1 8A 9A 00 6A 00 6A -- 06FD80
0A C4 83 00 44 EE E8 9A 00 6A 05 6A 00 6A 05 6A -- 06FD90
3D 83 FB BC 3E C5 2E EC 8B 55 57 56 CB 5E 5F C9 -- 06FDA0
00 44 F1 8A 9A 00 6A 00 6A 05 6A 02 6A 12 74 00 -- 06FDB0
9A 00 6A 05 6A 00 6A 05 6A 05 6A 12 EB 08 C4 83 -- 06FDC0
EC 8B 55 57 56 CB 5E 5F C9 0A C4 83 00 44 EE E8 -- 06FDD0
01 6A 06 6A 00 6A 12 74 00 3D 83 FB BC 3E C5 2E -- 06FDE0
06 6A 03 6A 12 EB 08 C4 83 00 44 F1 8A 9A 01 6A -- 06FDF0
0A C4 83 00 44 EE E8 9A 01 6A 06 6A 01 6A 01 FE -- 06FE00
3D 83 FB BC 3E C5 2E EC 8B 55 57 56 CB 5E 5F C9 -- 06FE10
00 44 F1 8A 9A 01 6A 01 6A 06 6A 01 6A 12 74 00 -- 06FE20
9A 01 6A 06 6A 01 6A 06 6A 04 6A 12 EB 08 C4 83 -- 06FE30
EC 8B 55 57 56 CB 5E 5F C9 0A C4 83 00 44 EE E8 -- 06FE40
01 6A 06 6A 02 6A 12 74 00 3D 83 FB BC 3E C5 2E -- 06FE50
06 6A 05 6A 12 EB 08 C4 83 00 44 F1 8A 9A 01 6A -- 06FE60
5F C9 0A C4 83 00 44 EE E8 9A 01 6A 06 6A 01 6A -- 06FE70
74 00 3D 83 FB BC 3E C5 2E EC 8B 55 57 56 CB 5E -- 06FE80
C4 83 00 44 F1 8A 9A 02 6A 02 6A 07 6A 00 6A 12 -- 06FE90
EE E8 9A 02 6A 07 6A 02 6A 07 6A 03 6A 12 EB 08 -- 06FEA0
C5 2E EC 8B 55 57 56 CB 5E 5F C9 0A C4 83 00 44 -- 06FEB0

02 6A 02 6A 07 6A 01 6A 12 74 00 3D 83 FB BC 3E -- 06FEC0
02 6A 07 6A 04 6A 12 EB 08 C4 83 00 44 F1 8A 9A -- 06FED0
CB 5E 5F C9 0A C4 83 00 44 EE E8 9A 02 6A 07 6A -- 06FEE0
6A 12 74 00 3D 83 FB BC 3E C5 2E EC 8B 55 57 56 -- 06FEF0
EB 08 C4 83 00 44 F1 8A 9A 02 6A 02 6A 07 6A 02 -- 06FF00
00 44 EE E8 9A 02 6A 07 6A 02 6A 07 6A 05 6A 12 -- 06FF10
BC 3E C5 2E EC 8B 55 57 56 CB 5E 5F C9 0A C4 83 -- 06FF20
8A 9A 03 6A 03 6A 08 6A 00 6A 12 74 00 3D 83 FB -- 06FF30
08 6A 03 6A 08 6A 03 6A 12 EB 08 C4 83 00 44 F1 -- 06FF40
57 56 CB 5E 5F C9 0A C4 83 00 44 EE E8 9A 03 6A -- 06FF50
6A 01 6A 12 74 00 3D 83 FB BC 3E C5 2E EC 8B 55 -- 06FF60
6A 12 EB 08 C4 83 00 44 F1 8A 9A 03 6A 03 6A 08 -- 06FF70
C4 83 00 44 EE E8 9A 03 6A 08 6A 03 6A 08 6A 04 -- 06FF80
83 FB BC 3E C5 2E EC 8B 55 57 56 CB 5E 5F C9 0A -- 06FF90
```

```
44 F1 8A 9A 03 6A 03 6A 08 6A 02 6A 12 74 00 3D -- 06FFA0
03 6A 08 6A 03 6A 08 6A 05 6A 12 EB 08 C4 83 00 -- 06FFB0
8B 55 57 56 CB 5E 5F C9 0A C4 83 00 44 EE E8 9A -- 06FFC0
9A 00 6A 03 6A 0E 74 00 3D 83 FB BC 3E C5 2E EC -- 06FFD0
F5 02 9A 00 6A 00 6A 0C EB 04 C4 83 00 44 F7 D1 -- 06FFE0
C5 2E EC 8B 55 57 56 CB 5E 5F C9 04 C4 83 00 44 -- 06FFF0
D1 9A 01 6A 04 6A 0E 74 00 3D 83 FB BC 3E 01 FE -- 070000
44 F5 02 9A 00 6A 01 6A 0C EB 04 C4 83 00 44 F7 -- 070010
3E C5 2E EC 8B 55 57 56 CB 5E 5F C9 04 C4 83 00 -- 070020
00 44 F7 D1 9A 02 6A 05 6A 0E 74 00 3D 83 FB BC -- 070030
C4 83 00 44 F5 02 9A 00 6A 02 6A 0C EB 04 C4 83 -- 070040
83 FB BC 3E C5 2E EC 8B 55 57 56 CB 5E 5F C9 04 -- 070050
04 C4 83 00 44 F7 D1 9A 03 6A 00 6A 0E 74 00 3D -- 070060
5F C9 04 C4 83 00 44 F5 02 9A 05 6A 00 6A 0C EB -- 070070
74 00 3D 83 FB BC 3E C5 2E EC 8B 55 57 56 CB 5E -- 070080
6A 0C EB 04 C4 83 00 44 F7 D1 9A 04 6A 01 6A 0E -- 070090
56 CB 5E 5F C9 04 C4 83 00 44 F5 02 9A 05 6A 01 -- 0700A0
02 6A 0E 74 00 3D 83 FB BC 3E C5 2E EC 8B 55 57 -- 0700B0
05 6A 02 6A 0C EB 04 C4 83 00 44 F7 D1 9A 05 6A -- 0700C0
8B 55 57 56 CB 5E 5F C9 04 C4 83 00 44 F5 02 9A -- 0700D0
9A 03 6A 00 6A 0E 74 00 3D 83 FB BC 3E C5 2E EC -- 0700E0
F5 02 9A 00 6A 03 6A 0C EB 04 C4 83 00 44 F7 D1 -- 0700F0
C5 2E EC 8B 55 57 56 CB 5E 5F C9 04 C4 83 00 44 -- 070100
44 F7 D1 9A 04 6A 01 6A 0E 74 00 3D 83 FB BC 3E -- 070110
83 00 44 F5 02 9A 00 6A 04 6A 0C EB 04 C4 83 00 -- 070120
FB BC 3E C5 2E EC 8B 55 57 56 CB 5E 5F C9 04 C4 -- 070130
C4 83 00 44 F7 D1 9A 05 6A 02 6A 0E 74 00 3D 83 -- 070140
C9 04 C4 83 00 44 F5 02 9A 00 6A 05 6A 0C EB 04 -- 070150
00 3D 83 FB BC 3E C5 2E EC 8B 55 57 56 CB 5E 5F -- 070160
0C EB 04 C4 83 00 44 F7 D1 9A 00 6A 03 6A 0E 74 -- 070170
CB 5E 5F C9 04 C4 83 00 44 F5 02 9A 05 6A 03 6A -- 070180
6A 0E 74 00 3D 83 FB BC 3E C5 2E EC 8B 55 57 56 -- 070190
6A 04 6A 0C EB 04 C4 83 00 44 F7 D1 9A 01 6A 04 -- 0701A0
55 57 56 CB 5E 5F C9 04 C4 83 00 44 F5 02 9A 05 -- 0701B0
02 6A 05 6A 0E 74 00 3D 83 FB BC 3E C5 2E EC 8B -- 0701C0
02 9A 05 6A 05 6A 0C EB 04 C4 83 00 44 F7 D1 9A -- 0701D0
00 00 3A C8 57 56 CB 5E 5F C9 04 C4 83 00 44 F5 -- 0701E0
03 2E 02 E7 C1 12 7E 8B 02 F7 46 C6 00 F9 46 C6 -- 0701F0
0C 7E 8B 05 D9 9B FB CE 1E 8E 2E FB CC 3E 01 FE -- 070200
05 D8 9B FB C2 1E 8E 2E FB C0 3E 03 2E 02 E7 C1 -- 070210
2E 76 00 5C ED 94 9A FB D0 1E DC 2E 9B 15 D9 9B -- 070220
FB C2 1E 8E 2E FB C0 3E 03 2E 02 E7 C1 0C 7E 8B -- 070230
03 2E E7 D1 0C 7E 8B 1D D9 9B FB D0 06 DD 2E 9B -- 070240
D9 9B 72 EB 00 64 05 C7 FB B6 1E 8E 2E FB B4 3E -- 070250

FB C0 3E 03 2E 02 E7 C1 0C 7E 8B CE 5E DD 9B EE -- 070260
5C ED 94 9A CE 5E DC 9B 05 D9 9B FB C2 1E 8E 2E -- 070270
8E 2E FB C0 3E 03 2E 02 E7 C1 0C 7E 8B 2B 73 00 -- 070280
03 2E E7 D1 0C 7E 8B 1D D9 9B EE D9 9B FB C2 1E -- 070290
7E 8B 22 EB 00 00 05 C7 FB B6 1E 8E 2E FB B4 3E -- 0702A0
8B 05 8B FB DA 1E 8E 2E FB D8 3E 03 2E E7 D1 12 -- 0702B0
05 01 FB B6 1E 8E 2E FB B4 3E 03 2E E7 D1 0C 7E -- 0702C0
FB C2 1E 8E 2E FB C0 3E 03 2E 02 E7 C1 0E 7E 8B -- 0702D0
3E 03 2E 02 E7 C1 1C 7E 8B E2 5E D9 9B 05 D9 9B -- 0702E0
46 8B E6 5E D9 9B 05 D9 9B FB C2 1E 8E 2E FB C0 -- 0702F0
46 89 FB DE 16 8B 2E FB DC 06 03 2E 09 E0 C1 0A -- 070300
03 09 E0 C1 0A 46 8B FB E0 3E C5 2E E0 56 89 DE -- 070310
8B FB E4 3E C5 2E DC 56 89 DA 46 89 02 55 8B 05 -- 070320
D8 56 89 D6 46 89 02 55 8B 05 03 09 E0 C1 0A 46 -- 070330
2E 9B E6 66 D8 9B E2 66 D8 9B FB D0 06 DD 2E 9B -- 070340
```

```
FF  03  EB  00  00  FE  46  C7  EA  5E  D9  9B  FB  E8  0E  DC  --  070350
9B  EE  D9  9B  00  AE  E9  03  75  01  00  FE  7E  81  FE  46  --  070360
03  E7  D1  00  F0  E7  81  04  E7  C1  FE  7E  8B  C6  5E  DD  --  070370
CE  5E  DD  9B  0D  DE  9B  E6  46  D9  9B  D8  5E  8E  D6  7E  --  070380
9B  DC  5E  8E  DA  7E  03  E7  D1  00  F0  E7  81  FE  7E  8B  --  070390
D9  9B  EA  46  D8  9B  CE  46  DC  9B  0D  DE  9B  E2  46  D9  --  0703A0
FE  7E  8B  11  73  00  5C  ED  94  9A  C6  5E  DC  9B  EE  56  --  0703B0
2E  9B  91  EB  00  00  05  C7  E0  5E  8E  DE  7E  03  E7  D1  --  0703C0
CE  5E  DC  9B  EE  46  D9  9B  CE  5E  DD  9B  FB  F0  06  DF  --  0703D0
8E  DE  7E  03  E7  D1  FE  7E  8B  12  76  00  5C  ED  94  9A  --  0703E0
ED  99  9A  EE  46  D9  9B  FF  66  E9  00  FF  05  C7  E0  5E  --  0703F0
D1  FE  7E  8B  08  C4  83  00  5C  ED  F9  9A  00  5C  01  FE  --  070400
FA  46  8D  16  FF  45  E9  05  89  E0  5E  8E  DE  7E  03  E7  --  070410
0A  76  FF  DE  76  FF  E0  76  FF  F2  76  FF  F4  76  FF  50  --  070420
45  68  09  6A  50  E4  2A  F9  46  8A  50  E4  2A  F7  46  8A  --  070430
03  2E  E7  D1  0E  7E  8B  16  C4  83  00  64  40  D0  9A  01  --  070440
A0  8C  9A  0E  76  FF  35  FF  FB  B6  1E  8E  2E  FB  B4  3E  --  070450
2E  FB  B4  3E  03  2E  E7  D1  10  7E  8B  04  C4  83  00  5C  --  070460
C4  83  00  5C  A0  8C  9A  10  76  FF  35  FF  FB  B6  1E  8E  --  070470
CB  5E  5F  C9  9B  02  C4  83  00  54  23  E4  9A  01  6A  04  --  070480
7E  8B  02  F7  46  C6  00  F9  46  C6  00  00  3A  C8  57  56  --  070490
D9  9B  FB  CE  1E  8E  2E  FB  CC  3E  03  2E  02  E7  C1  10  --  0704A0
C2  1E  8E  2E  FB  C0  3E  03  2E  02  E7  C1  0C  7E  8B  05  --  0704B0
ED  94  9A  FB  D0  1E  DC  2E  9B  15  D9  9B  05  D8  9B  FB  --  0704C0
2E  FB  C0  3E  03  2E  02  E7  C1  0C  7E  8B  2E  76  00  5C  --  0704D0
0C  7E  8B  1D  D9  9B  FB  D0  06  DD  2E  9B  FB  C2  1E  8E  --  0704E0
00  64  05  C7  FB  B6  1E  8E  2E  FB  B4  3E  03  2E  E7  D1  --  0704F0
2E  02  E7  C1  0C  7E  8B  CE  5E  DD  9B  EE  D9  9B  72  EB  --  070500
CE  5E  DC  9B  05  D9  9B  FB  C2  1E  8E  2E  FB  C0  3E  03  --  070510
3E  03  2E  02  E7  C1  0C  7E  8B  2B  73  00  5C  ED  94  9A  --  070520
0C  7E  8B  1D  D9  9B  EE  D9  9B  FB  C2  1E  8E  2E  FB  C0  --  070530
00  00  05  C7  FB  B6  1E  8E  2E  FB  B4  3E  03  2E  E7  D1  --  070540
DA  1E  8E  2E  FB  D8  3E  03  2E  E7  D1  10  7E  8B  22  EB  --  070550
1E  8E  2E  FB  B4  3E  03  2E  E7  D1  0C  7E  8B  05  8B  FB  --  070560
2E  FB  CC  3E  03  2E  02  E7  C1  10  7E  8B  05  01  FB  B6  --  070570
3E  03  2E  02  E7  C1  0E  7E  8B  05  D9  9B  FB  CE  1E  8E  --  070580
DC  2E  9B  15  D9  9B  2D  D8  9B  FB  C2  1E  8E  2E  FB  C0  --  070590
02  E7  C1  0E  7E  8B  2E  76  00  5C  ED  94  9A  FB  D0  1E  --  0705A0
FB  D0  06  DD  2E  9B  FB  C2  1E  8E  2E  FB  C0  3E  03  2E  --  0705B0
1E  8E  2E  FB  B4  3E  03  2E  E7  D1  0E  7E  8B  1D  D9  9B  --  0705C0
8B  CE  5E  DD  9B  EE  D9  9B  72  EB  00  64  05  C7  FB  B6  --  0705D0
9B  FB  C2  1E  8E  2E  FB  C0  3E  03  2E  02  E7  C1  0E  7E  --  0705E0
0E  7E  8B  2B  73  00  5C  ED  94  9A  CE  5E  DC  9B  05  D9  --  0705F0

9B  FB  C2  1E  8E  2E  FB  C0  3E  03  2E  02  E7  C1  01  FE  --  070600
2E  FB  B4  3E  03  2E  E7  D1  0E  7E  8B  1D  D9  9B  EE  D9  --  070610
2E  E7  D1  10  7E  8B  22  EB  00  00  05  C7  FB  B6  1E  8E  --  070620
E7  D1  0E  7E  8B  05  8B  FB  DA  1E  8E  2E  FB  D8  3E  03  --  070630
C1  0C  7E  8B  05  29  FB  B6  1E  8E  2E  FB  B4  3E  03  2E  --  070640
9B  05  D9  9B  FB  C2  1E  8E  2E  FB  C0  3E  03  2E  02  E7  --  070650
8E  2E  FB  C0  3E  03  2E  02  E7  C1  0E  7E  8B  E2  5E  D9  --  070660
09  E0  C1  0A  46  8B  E6  5E  D9  9B  05  D9  9B  FB  C2  1E  --  070670
E0  56  89  DE  46  89  FB  DE  16  8B  2E  FB  DC  06  03  2E  --  070680
02  55  8B  05  03  09  E0  C1  0A  46  8B  FB  E0  3E  C5  2E  --  070690
E0  C1  0A  46  8B  FB  E4  3E  C5  2E  DC  56  89  DA  46  89  --  0706A0
06  DD  2E  9B  D8  56  89  D6  46  89  02  55  8B  05  03  09  --  0706B0
FB  E8  0E  DC  2E  9B  E6  66  D8  9B  E2  66  D8  9B  FB  D0  --  0706C0
7E  81  FE  46  FF  03  EB  00  00  FE  46  C7  EA  5E  D9  9B  --  0706D0
8B  C6  5E  DD  9B  EE  D9  9B  00  AE  E9  03  75  01  00  FE  --  0706E0
5E  8E  D6  7E  03  E7  D1  00  F0  E7  81  04  E7  C1  FE  7E  --  0706F0
```

498

```
81 FE 7E 8B CE 5E DD 9B 0D DE 9B E6 46 D9 9B D8 -- 070700
9B E2 46 D9 9B DC 5E 8E DA 7E 03 E7 D1 00 F0 E7 -- 070710
DC 9B EE 56 D9 9B EA 46 D8 9B CE 46 DC 9B 0D DE -- 070720
7E 03 E7 D1 FE 7E 8B 11 73 00 5C ED 94 9A C6 5E -- 070730
FB F0 06 DF 2E 9B 91 EB 00 00 05 C7 E0 5E 8E DE -- 070740
5C ED 94 9A CE 5E DC 9B EE 46 D9 9B CE 5E DD 9B -- 070750
05 C7 E0 5E 8E DE 7E 03 E7 D1 FE 7E 8B 12 76 00 -- 070760
F9 9A 00 5C ED 99 9A EE 46 D9 9B FF 66 E9 00 FF -- 070770
5E 8E DE 7E 03 E7 D1 FE 7E 8B 08 C4 83 00 5C ED -- 070780
76 FF F4 76 FF 50 FA 46 8D 16 FF 45 E9 05 89 E0 -- 070790
50 E4 2A F7 46 8A 0A 76 FF DE 76 FF E0 76 FF F2 -- 0707A0
00 64 40 D0 9A 01 45 68 09 6A 50 E4 2A F9 46 8A -- 0707B0
1E 8E 2E FB B4 3E 03 2E E7 D1 0C 7E 8B 16 C4 83 -- 0707C0
8B 04 C4 83 00 5C A0 8C 9A 0C 76 FF 35 FF FB B6 -- 0707D0
35 FF FB B6 1E 8E 2E FB B4 3E 03 2E E7 D1 0E 7E -- 0707E0
23 E4 9A 01 6A 04 C4 83 00 5C A0 8C 9A 0E 76 FF -- 0707F0
42 C8 57 56 CB 5E 5F C9 9B 02 C4 83 00 54 01 FE -- 070800
D6 46 89 0A 46 8B 02 F5 46 C6 00 F7 46 C6 00 00 -- 070810
46 8B 0A 46 FF 03 EB D8 46 89 00 04 05 0A 46 8B -- 070820
2E 02 E7 C1 0C 7E 8B 00 DA E9 03 7C D8 46 3B 0A -- 070830
C1 0A 7E 8B 05 D9 9B FB CE 1E 8E 2E FB CC 3E 03 -- 070840
9B 05 D8 9B FB C2 1E 8E 2E FB C0 3E 03 2E 02 E7 -- 070850
8B 2E 76 00 5C ED 94 9A FB D0 1E DC 2E 9B 15 D9 -- 070860
9B FB C2 1E 8E 2E FB C0 3E 03 2E 02 E7 C1 0A 7E -- 070870
3E 03 2E E7 D1 0A 7E 8B 1D D9 9B FB D0 06 DD 2E -- 070880
EE D9 9B 8E EB 00 64 05 C7 FB B6 1E 8E 2E FB B4 -- 070890
2E FB C0 3E 03 2E 02 E7 C1 0A 7E 8B C6 5E DD 9B -- 0708A0
00 5C ED 94 9A C6 5E DC 9B 05 D9 9B FB C2 1E 8E -- 0708B0
1E 8E 2E FB C0 3E 03 2E 02 E7 C1 0A 7E 8B 2C 73 -- 0708C0
3E 03 2E E7 D1 0A 7E 8B 1D D9 9B EE D9 9B FB C2 -- 0708D0
7E 8B FF 3D E9 00 00 05 C7 FB B6 1E 8E 2E FB B4 -- 0708E0
8B 05 8B FB DA 1E 8E 2E FB D8 3E 03 2E E7 D1 0C -- 0708F0
05 01 FB B6 1E 8E 2E FB B4 3E 03 2E E7 D1 0A 7E -- 070900
FE 7E 83 FE 46 FF 03 EB 00 00 FE 46 C7 FF 18 E9 -- 070910
C0 3E 03 2E 02 E7 C1 FE 7E 8B 01 80 E9 03 75 04 -- 070920
FE 7E 8B E0 5E D9 9B 05 D9 9B FB C2 1E 8E 2E FB -- 070930
FB C2 1E 8E 2E FB C0 3E 03 2E 02 E7 C1 05 C7 83 -- 070940
06 03 2E 09 E0 C1 FE 46 8B E4 5E D9 9B 05 D9 9B -- 070950
3E C5 2E DE 56 89 DC 46 89 FB DE 16 8B 2E FB DC -- 070960
D2 46 89 02 55 8B 05 03 09 E0 C1 FE 46 8B FB E0 -- 070970
05 03 09 E0 C1 FE 46 8B FB E4 3E C5 2E D4 56 89 -- 070980
9B FB D0 06 DD 2E 9B D0 56 89 CE 46 89 02 55 8B -- 070990

5E D9 9B FB E8 0E DC 2E 9B E4 66 D8 9B E0 66 D8 -- 0709A0
01 00 FC 7E 81 FC 46 FF 03 EB 00 00 FC 46 C7 E8 -- 0709B0
C1 FC 7E 8B BE 5E DD 9B EE D9 9B 00 AE E9 03 75 -- 0709C0
D9 9B D0 5E 8E CE 7E 03 E7 D1 00 F0 E7 81 04 E7 -- 0709D0
00 F0 E7 81 FC 7E 8B C6 5E DD 9B 0D DE 9B E4 46 -- 0709E0
9B 0D DE 9B E0 46 D9 9B D4 5E 8E D2 7E 03 E7 D1 -- 0709F0
5E DC 9B EC 56 D9 9B E8 46 D8 9B C6 46 DC 01 FE -- 070A00
DC 7E 03 E7 D1 FC 7E 8B 11 73 00 5C ED 94 9A BE -- 070A10
9B FB F0 06 DF 2E 9B 91 EB 00 00 05 C7 DE 5E 8E -- 070A20
00 5C ED 94 9A C6 5E DC 9B EC 46 D9 9B C6 5E DD -- 070A30
FF 05 C7 DE 5E 8E DC 7E 03 E7 D1 FC 7E 8B 12 76 -- 070A40
ED F9 9A 00 5C ED 99 9A EC 46 D9 9B FF 66 E9 00 -- 070A50
DE 5E 8E DC 7E 03 E7 D1 FC 7E 8B 08 C4 83 00 5C -- 070A60
F0 76 FF F2 76 FF 50 F8 46 8D 16 FF 45 E9 05 89 -- 070A70
8A 50 E4 2A F5 46 8A FE 76 FF DC 76 FF DE 76 FF -- 070A80
83 00 64 40 D0 9A 01 45 68 09 6A 50 E4 2A F7 46 -- 070A90
1E 7D D8 46 3B D6 46 8B D6 46 FF FE 77 E9 16 C4 -- 070AA0
```

```
FF FB B6 1E 8E 2E FB B4 3E 03 2E E7 D1 D6 7E 8B -- 070AB0
01 6A D7 EB 04 C4 83 00 5C A0 8C 9A D6 76 FF 35 -- 070AC0
C8 57 56 CB 5E 5F C9 9B 02 C4 83 00 54 23 E4 9A -- 070AD0
00 00 DA 46 C7 02 F5 46 C6 00 F7 46 C6 00 00 3E -- 070AE0
7E 8B 00 DA E9 03 7C 04 DA 7E 83 DA 46 FF 03 EB -- 070AF0
D9 9B FB CE 1E 8E 2E FB CC 3E 03 2E 02 E7 C1 0A -- 070B00
C2 1E 8E 2E FB C0 3E 03 2E 02 E7 C1 DA 7E 8B 05 -- 070B10
ED 94 9A FB D0 1E DC 2E 9B 15 D9 9B 05 D8 9B FB -- 070B20
2E FB C0 3E 03 2E 02 E7 C1 DA 7E 8B 2E 76 00 5C -- 070B30
DA 7E 8B 1D D9 9B FB D0 06 DD 2E 9B FB C2 1E 8E -- 070B40
00 64 05 C7 FB B6 1E 8E 2E FB B4 3E 03 2E E7 D1 -- 070B50
2E 02 E7 C1 DA 7E 8B CA 5E DD 9B EE D9 9B 90 EB -- 070B60
CA 5E DC 9B 05 D9 9B FB C2 1E 8E 2E FB C0 3E 03 -- 070B70
3E 03 2E 02 E7 C1 DA 7E 8B 2C 73 00 5C ED 94 9A -- 070B80
DA 7E 8B 1D D9 9B EE D9 9B FB C2 1E 8E 2E FB C0 -- 070B90
00 00 05 C7 FB B6 1E 8E 2E FB B4 3E 03 2E E7 D1 -- 070BA0
1E 8E 2E FB D8 3E 03 2E E7 D1 0A 7E 8B FF 3F E9 -- 070BB0
8E 2E FB B4 3E 03 2E E7 D1 DA 7E 8B 05 8B FB DA -- 070BC0
FF 03 EB 00 05 DA 46 C7 FF 1A E9 05 01 FB B6 1E -- 070BD0
E7 C1 0C 7E 8B 00 DA E9 03 7C 09 DA 7E 83 DA 46 -- 070BE0
7E 8B 05 D9 9B FB CE 1E 8E 2E FB CC 3E 03 2E 02 -- 070BF0
FB C2 1E 8E 2E FB C0 3E 03 2E 02 E7 C1 DA 01 FE -- 070C00
5C ED 94 9A FB D0 1E DC 2E 9B 15 D9 9B 05 D8 9B -- 070C10
8E 2E FB C0 3E 03 2E 02 E7 C1 DA 7E 8B 2E 76 00 -- 070C20
D1 DA 7E 8B 1D D9 9B FB D0 06 DD 2E 9B FB C2 1E -- 070C30
EB 00 64 05 C7 FB B6 1E 8E 2E FB B4 3E 03 2E E7 -- 070C40
03 2E 02 E7 C1 DA 7E 8B CA 5E DD 9B EE D9 9B 90 -- 070C50
9A CA 5E DC 9B 05 D9 9B FB C2 1E 8E 2E FB C0 3E -- 070C60
C0 3E 03 2E 02 E7 C1 DA 7E 8B 2C 73 00 5C ED 94 -- 070C70
D1 DA 7E 8B 1D D9 9B EE D9 9B FB C2 1E 8E 2E FB -- 070C80
E9 00 00 05 C7 FB B6 1E 8E 2E FB B4 3E 03 2E E7 -- 070C90
DA 1E 8E 2E FB D8 3E 03 2E E7 D1 0C 7E 8B FF 3F -- 070CA0
1E 8E 2E FB B4 3E 03 2E E7 D1 DA 7E 8B 05 8B FB -- 070CB0
46 FF 03 EB 00 00 FE 46 C7 FF 1A E9 05 01 FB B6 -- 070CC0
02 E7 C1 FE 7E 8B 01 7D E9 03 75 04 FE 7E 83 FE -- 070CD0
5E D9 9B 05 D9 9B FB C2 1E 8E 2E FB C0 3E 03 2E -- 070CE0
2E FB C0 3E 03 2E 02 E7 C1 05 C7 83 FE 7E 8B E0 -- 070CF0
E0 C1 FE 46 8B E4 5E D9 9B 05 D9 9B FB C2 1E 8E -- 070D00
56 89 DC 46 89 FB DE 16 8B 2E FB DC 06 03 2E 09 -- 070D10
55 8B 05 03 09 E0 C1 FE 46 8B FB E0 3E C5 2E DE -- 070D20
C1 FE 46 8B FB E4 3E C5 2E D8 56 89 D6 46 89 02 -- 070D30

DD 2E 9B D4 56 89 D2 46 89 02 55 8B 05 03 09 E0 -- 070D40
E8 0E DC 2E 9B E4 66 D8 9B E0 66 D8 9B FB D0 06 -- 070D50
81 FC 46 FF 03 EB 00 00 FC 46 C7 E8 5E D9 9B FB -- 070D60
C2 5E DD 9B EE D9 9B 00 AE E9 03 75 01 00 FC 7E -- 070D70
8E D2 7E 03 E7 D1 00 F0 E7 81 04 E7 C1 FC 7E 8B -- 070D80
FC 7E 8B CA 5E DD 9B 0D DE 9B E4 46 D9 9B D4 5E -- 070D90
E0 46 D9 9B D8 5E 8E D6 7E 03 E7 D1 00 F0 E7 81 -- 070DA0
9B EC 56 D9 9B E8 46 D8 9B CA 46 DC 9B 0D DE 9B -- 070DB0
03 E7 D1 FC 7E 8B 11 73 00 5C ED 94 9A C2 5E DC -- 070DC0
F0 06 DF 2E 9B 91 EB 00 00 05 C7 DE 5E 8E DC 7E -- 070DD0
ED 94 9A CA 5E DC 9B EC 46 D9 9B CA 5E DD 9B FB -- 070DE0
C7 DE 5E 8E DC 7E 03 E7 D1 FC 7E 8B 12 76 00 5C -- 070DF0
5C ED 99 9A EC 46 D9 9B FF 66 E9 00 FF 05 01 FE -- 070E00
7E 03 E7 D1 FC 7E 8B 08 C4 83 00 5C ED F9 9A 00 -- 070E10
76 FF 50 F8 46 8D 16 FF 45 E9 05 89 DE 5E 8E DC -- 070E20
F5 46 8A FE 76 FF DC 76 FF DE 76 FF F0 76 FF F2 -- 070E30
D0 9A 01 45 68 09 6A 50 E4 2A F7 46 8A 50 E4 2A -- 070E40
03 EB 00 00 DA 46 C7 FE 77 E9 16 C4 83 00 64 40 -- 070E50
```

500

```
03 2E E7 D1 DA 7E 8B 1E 7D 04 DA 7E 83 DA 46 FF -- 070E60
A0 8C 9A DA 76 FF 35 FF FB B6 1E 8E 2E FB B4 3E -- 070E70
46 FF 03 EB 00 05 DA 46 C7 D9 EB 04 C4 83 00 5C -- 070E80
B4 3E 03 2E E7 D1 DA 7E 8B 1E 7D 09 DA 7E 83 DA -- 070E90
00 5C A0 8C 9A DA 76 FF 35 FF FB B6 1E 8E 2E FB -- 070EA0
9B 02 C4 83 00 54 23 E4 9A 01 6A D9 EB 04 C4 83 -- 070EB0
00 3C BE C0 00 3C 2F 9C 00 3C 40 A6 CB 5E 5F C9 -- 070EC0
00 3C B6 A8 3F E0 00 00 00 00 00 00 00 3C 40 7E -- 070ED0
00 3C B6 C0 00 3C B6 9C 3F F0 00 00 00 00 00 00 -- 070EE0
40 6F E0 00 00 00 00 00 00 00 3C 40 7A 00 3C 40 76 -- 070EF0
00 3D 83 FF 9E 3E C5 2E 00 00 1C C8 57 56 00 FF -- 070F00
5C 97 1E 9A FF A2 36 FF 2E FF A4 36 FF 2E 12 7E -- 070F10
C4 83 00 5C D3 78 9A 50 E4 46 8D 16 04 C4 83 00 -- 070F20
12 7E 00 3D 83 FF 9E 3E C5 2E 0A 32 FA 46 C7 04 -- 070F30
83 00 5C 97 1E 9A FF A6 36 FF 2E FF A8 36 FF 2E -- 070F40
89 04 C4 83 00 64 4E A1 9A 01 6A FA 76 FF 04 C4 -- 070F50
10 6D 05 C7 0E 7E C5 43 75 C2 0B FE 56 89 FC 46 -- 070F60
2E 35 FF 0E 7E C5 17 7E 00 3D 83 FF 9E 3E C5 2E -- 070F70
C4 83 00 5C 97 1E 9A FF AA 36 FF 2E FF AC 36 FF -- 070F80
52 9A 35 FF 0E 7E C5 00 6A 00 6A 00 6A 00 6A 06 -- 070F90
9E 3E C5 2E 02 FD E9 00 01 B8 0A C4 83 00 64 28 -- 070FA0
FF AE 36 FF 2E FF B0 36 FF 2E 12 7E 00 3D 83 FF -- 070FB0
86 9A FC 76 FF FE 76 FF 04 C4 83 00 5C 97 1E 9A -- 070FC0
54 6A 05 89 FC 7E C5 FA 46 8B 04 C4 83 00 64 4B -- 070FD0
FC 46 8B FE 76 FF FF B2 36 FF 2E FF B4 36 FF 2E -- 070FE0
FF 2E 12 6A 0A C4 83 00 5C ED 6E 9A 50 00 02 05 -- 070FF0
FC 46 8B FE 76 FF FF B6 36 FF 2E FF B8 36 01 FE -- 071000
BA 3E C5 2E 0A C4 83 00 5C ED 6E 9A 50 00 56 05 -- 071010
BE 3E C5 2E 02 08 9D D9 9B FC 7E C5 05 D9 9B FF -- 071020
8B FC 46 8B 02 0C 9D D9 9B FC 7E C5 05 D9 9B FF -- 071030
7E C5 EE D9 9B F8 56 89 F6 46 89 02 2A 05 FE 56 -- 071040
9B F6 7E C5 05 D9 9B FF C2 3E C5 2E 1D D9 9B F6 -- 071050
0A 76 FF 0C 76 FF 50 00 08 05 52 57 56 04 5D D9 -- 071060
B4 36 FF 2E 54 6A 5E 5F 00 5C FE EC 9A 08 00 68 -- 071070
50 01 A2 05 FC 46 8B FE 76 FF FF B2 36 FF 2E FF -- 071080
FF 50 E4 46 8D 16 12 6A 0A C4 83 00 5C ED 6E 9A -- 071090
C4 83 00 5C ED 6E 9A 50 01 F6 05 FC 46 8B FE 76 -- 0710A0
85 C7 01 02 19 85 C6 00 02 18 85 C6 FC 7E C5 0A -- 0710B0
FF 2E 12 7E 00 3D 83 FF 9E 3E C5 2E 00 01 02 14 -- 0710C0
04 C4 83 00 5C 97 1E 9A FF C6 36 FF 2E FF C8 36 -- 0710D0

2E 00 6A 0A 6A 03 6A FC 76 FF FE 76 FF FA 76 FF -- 0710E0
C4 83 00 5C A5 FF 9A FF CA 36 FF 2E FF CC 36 FF -- 0710F0
FF 9E 3E C5 2E 3C 74 00 3D 83 05 89 0E 7E C5 10 -- 071100
2E FF D0 36 FF 2E 35 FF 0E 7E C5 17 7E 00 3D 83 -- 071110
00 6A 00 6A 06 C4 83 00 5C 97 1E 9A FF CE 36 FF -- 071120
C4 83 00 64 28 52 9A 35 FF 0E 7E C5 00 6A 00 6A -- 071130
7E 00 3D 83 FF 9E 3E C5 2E 01 64 E9 00 02 B8 0A -- 071140
00 5C 97 1E 9A FF D2 36 FF 2E FF D4 36 FF 2E 12 -- 071150
46 8D 16 FF D6 36 FF 2E FF D8 36 FF 2E 04 C4 83 -- 071160
5C D3 06 9A FF B2 36 FF 2E FF B4 36 FF 2E 50 E4 -- 071170
C5 2E 3C 74 00 3D 83 05 89 0E 7E C5 0C C4 83 00 -- 071180
36 FF 2E 35 FF 0E 7E C5 17 7E 00 3D 83 FF 9E 3E -- 071190
6A 06 C4 83 00 5C 97 1E 9A FF DA 36 FF 2E FF DC -- 0711A0
64 28 52 9A 35 FF 0E 7E C5 00 6A 00 6A 00 6A 00 -- 0711B0
D8 36 FF 2E 12 6A 00 E1 E9 00 03 B8 0A C4 83 00 -- 0711C0
FF DE 36 FF 2E FF E0 36 FF 2E FF D6 36 FF 2E FF -- 0711D0
36 FF 2E FF E8 36 FF 2E 0A C4 83 00 5C ED 6E 9A -- 0711E0
64 5A 60 9A FF E2 36 FF 2E FF E4 36 FF 2E FF E6 -- 0711F0
1C 7E 00 3D 83 FF 9E 3E C5 2E 08 C4 83 00 01 FE -- 071200
```

```
2E FF EC 36 FF 2E FF E2 36 FF 2E FF E4 36 FF 2E -- 071210
FF 2E 01 6A 08 C4 83 00 5C 97 1E 9A FF EA 36 FF -- 071220
36 FF 2E FF B4 36 FF 2E FF DE 36 FF 2E FF E0 36 -- 071230
83 05 89 0E 7E C5 0A C4 83 00 5C 94 FB 9A FF B2 -- 071240
7E C5 17 7E 00 3D 83 FF 9E 3E C5 2E 3B 74 00 3D -- 071250
97 1E 9A FF EE 36 FF 2E FF F0 36 FF 2E 35 FF 0E -- 071260
0E 7E C5 00 6A 00 6A 00 6A 00 6A 06 C4 83 00 5C -- 071270
2E 1E EB 00 04 B8 0A C4 83 00 64 28 52 9A 35 FF -- 071280
FF 2E FF F4 36 FF 2E 12 7E 00 3D 83 FF 9E 3E C5 -- 071290
5F C9 9B C0 2B 04 C4 83 00 5C 97 1E 9A FF F2 36 -- 0712A0
09 AA 00 6C 09 9A 00 6C 09 6A 00 24 3D 50 CB 5E -- 0712B0
90 9C 00 3C 90 D8 00 3C 86 A2 00 6C 09 FE 00 6C -- 0712C0
0A 2E 00 6C 0A 13 00 3C 90 7E 00 3C 90 98 00 3C -- 0712D0
0A C0 00 3C 86 F6 00 6C 0A 95 00 6C 0A 36 00 6C -- 0712E0
0B 19 00 6C 0B A2 00 6C 0B AB 00 6C 0B A8 00 6C -- 0712F0
00 00 00 00 00 00 00 6C 0B 95 00 6C 0B 3D 00 6C -- 071300
05 D9 9B 0A 7E C5 00 00 04 C8 57 56 00 00 00 00 -- 071310
1D D9 9B 0A 7E C5 05 D9 9B 0E 7E C5 FC 5E D9 9B -- 071320
56 CB 5E 5F C9 9B 1D D9 9B 0E 7E C5 FC 46 D9 9B -- 071330
0A 46 8B 00 FE 46 C6 00 FF 46 C6 00 00 06 C8 57 -- 071340
FF FD 46 88 FC 46 88 FB 46 88 0C 46 8B FA 46 88 -- 071350
50 E4 2A FE 46 8A 50 FA 46 8D 16 0E 76 FF 10 76 -- 071360
00 64 40 D0 9A 01 32 68 06 6A 50 E4 2A FF 46 8A -- 071370
FE 46 C7 00 00 08 C8 57 56 CB 5E 5F C9 10 C4 83 -- 071380
F8 46 88 0A 46 8B 00 FC 46 C6 01 FD 46 C6 00 00 -- 071390
8D 16 50 FE 46 8D 16 FB 46 88 FA 46 88 F9 46 88 -- 0713A0
6A 50 E4 2A FD 46 8A 50 E4 2A FC 46 8A 50 F8 46 -- 0713B0
CB 5E 5F C9 10 C4 83 00 64 40 D0 9A 01 32 68 06 -- 0713C0
50 FA 46 8D 16 00 00 FA 46 C7 00 00 06 C8 57 56 -- 0713D0
46 89 05 8B 19 FC 3E C5 2E 50 FC 46 89 00 5A B8 -- 0713E0
0D 74 00 FA 7E 83 08 C4 83 00 4C 00 2B 9A 50 FE -- 0713F0
16 1F EB 02 C4 83 00 2C 69 97 9A FA 76 FF 01 FE -- 071400
1A 00 3E C5 2E 50 FC 46 89 00 80 B8 50 FA 46 8D -- 071410
5F C9 08 C4 83 00 4C 00 2B 9A 50 FE 46 89 05 8B -- 071420
00 F8 46 C7 00 FA 46 C6 00 00 08 C8 57 56 CB 5E -- 071430
00 7F B8 50 FC 46 89 00 7F B8 50 F8 46 8D 16 00 -- 071440
F8 46 8D 16 08 C4 83 00 4C 00 2B 9A 50 FE 46 89 -- 071450
9A 50 FE 46 89 00 7E B8 50 FC 46 89 00 7E B8 50 -- 071460
50 F8 46 8D 16 7E FB 46 C6 08 C4 83 00 4C 00 2B -- 071470

00 6A 01 6A 01 6A 50 FB 46 8D 16 50 FA 46 8D 16 -- 071480
C6 18 C4 83 00 64 40 D0 9A 01 43 68 0A 6A 00 6A -- 071490
46 8D 16 50 FA 46 8D 16 50 F8 46 8D 16 7F FB 46 -- 0714A0
9A 01 43 68 0A 6A 00 6A 05 6A 01 6A 01 6A 50 FB -- 0714B0
00 14 C8 57 56 CB 5E 5F C9 18 C4 83 00 64 40 D0 -- 0714C0
B8 50 F4 46 8D 16 00 00 F4 46 C7 00 F9 46 C6 00 -- 0714D0
00 2B 9A 50 FE 46 89 00 7F B8 50 FC 46 89 00 A0 -- 0714E0
FC 46 89 00 A0 B8 50 F4 46 8D 16 08 C4 83 00 4C -- 0714F0
08 C4 83 00 4C 00 2B 9A 50 FE 46 89 00 7E B8 50 -- 071500
46 8D 16 50 F4 46 8D 16 7F FB 46 C6 7E FA 46 C6 -- 071510
6A 00 6A 00 6A 02 6A 01 6A 50 FA 46 8D 16 50 F9 -- 071520
9B E8 D9 9B 18 C4 83 00 64 40 D0 9A 01 43 68 0A -- 071530
9B 1A 06 0E DC 2E 9B 1A 04 06 DF 2E 9B EC 5E DD -- 071540
08 C4 83 00 5C ED F9 9A 00 5C ED 99 9A EC 46 DC -- 071550
00 5C C0 38 9A 50 F4 46 8D 16 50 57 56 F6 46 89 -- 071560
FC 46 C7 00 00 22 C8 57 56 CB 5E 5F C9 9B 5E 5F -- 071570
46 C6 02 E0 46 C6 01 DF 46 C6 00 DE 46 C6 00 00 -- 071580
46 C6 06 E4 46 C6 05 E3 46 C6 04 E2 46 C6 03 E1 -- 071590
46 C6 0A E8 46 C6 09 E7 46 C6 08 E6 46 C6 07 E5 -- 0715A0
46 C6 0E EC 46 C6 0D EB 46 C6 0C EA 46 C6 0B E9 -- 0715B0
```

502

```
14 36 FF 2E 50 DE 46 8D 16 50 FC 46 8D 16 0F ED -- 0715C0
6A 35 FF 1A 0E 3E C5 2E 10 6A 1A 12 36 FF 2E 1A -- 0715D0
18 C4 83 00 64 40 D0 9A 01 43 68 0A 6A 00 6A 02 -- 0715E0
C4 83 00 64 59 DC 9A FC 76 FF 0E 74 00 FC 7E 83 -- 0715F0
3E C5 2E 05 8B 1A 00 3E C5 2E 01 01 E9 02 01 FE -- 071600
46 8D 16 00 02 05 C7 1A 1A 3E C5 2E 05 89 1A 16 -- 071610
22 36 FF 2E 1A 24 36 FF 2E 50 DE 46 8D 16 50 FC -- 071620
0A 6A 00 6A 00 6A 35 FF 1A 1E 3E C5 2E 10 6A 1A -- 071630
75 00 FC 7E 83 18 C4 83 00 64 40 D0 9A 01 43 68 -- 071640
00 A7 E9 03 74 00 03 3D 05 8B 1A 26 3E C5 2E A7 -- 071650
7E 83 00 99 E9 03 75 02 FE 7E 83 00 00 FE 46 C7 -- 071660
19 FC 3E C5 2E 05 EB 1A 00 3E C5 2E 07 75 00 FE -- 071670
F4 46 89 00 F4 0D 05 8B F6 46 89 00 04 0D 05 8B -- 071680
F0 46 89 C0 2B 50 EE 46 89 C0 2B 50 FC 46 8D 16 -- 071690
04 B8 F6 76 FF F4 76 FF 50 F2 46 89 00 10 B8 50 -- 0716A0
01 4F 68 09 6A 50 FA 46 89 C0 2B 50 F8 46 89 00 -- 0716B0
89 C0 2B 50 FC 46 8D 16 16 C4 83 00 64 40 D0 9A -- 0716C0
F2 46 89 00 10 B8 50 F0 46 89 00 FF B8 50 EE 46 -- 0716D0
C0 2B 50 F8 46 89 00 03 B8 F6 76 FF F4 76 FF 50 -- 0716E0
C4 83 00 64 40 D0 9A 01 4F 68 09 6A 50 FA 46 89 -- 0716F0
00 1A C8 57 56 CB 5E 5F C9 FF 5E E9 FE 46 FF 16 -- 071700
46 C6 01 ED 46 C6 00 EC 46 C6 00 00 FC 46 C7 00 -- 071710
46 C6 05 F1 46 C6 04 F0 46 C6 03 EF 46 C6 02 EE -- 071720
46 C6 09 F5 46 C6 08 F4 46 C6 07 F3 46 C6 06 F2 -- 071730
46 C6 0D F9 46 C6 0C F8 46 C6 0B F7 46 C6 0A F6 -- 071740
1A 1E 3E C5 2E 1A 0E 36 C4 2E 0F FB 46 C6 0E FA -- 071750
04 C4 83 00 64 4E A1 9A 01 6A 50 04 03 26 05 8B -- 071760
1A 1E 3E C5 2E 1A 0E 36 C4 2E EA 56 89 E8 46 89 -- 071770
FF 2E E8 76 FF 52 57 56 FE 46 89 04 03 26 05 8B -- 071780
9A 35 FF 1A 0E 3E C5 2E 1A 12 36 FF 2E 1A 14 36 -- 071790
03 05 8B 1A 0E 3E C5 2E 57 56 5E 5F 00 5C FE EC -- 0717A0
22 36 FF 2E 1A 24 36 FF 2E 50 52 EA 56 8B E8 46 -- 0717B0
16 5E 5F 00 5C FE EC 9A 35 FF 1A 1E 3E C5 2E 1A -- 0717C0
6A E8 76 FF EA 76 FF 50 EC 46 8D 16 50 FC 46 8D -- 0717D0
40 D0 9A 01 43 68 0A 6A 00 6A 02 6A FE 76 FF 10 -- 0717E0
00 64 4E E3 9A E8 76 FF EA 76 FF 18 C4 83 00 64 -- 0717F0
16 00 E7 46 C6 2E 75 00 FC 7E 83 04 C4 83 01 FE -- 071800
10 6A 50 E7 46 8D 16 50 EC 46 8D 16 50 FC 46 8D -- 071810

00 64 40 D0 9A 01 43 68 0A 6A 00 6A 00 6A 01 6A -- 071820
64 59 DC 9A FC 76 FF 0B 74 00 FC 7E 83 18 C4 83 -- 071830
12 6A 00 00 14 C8 57 56 CB 5E 5F C9 02 C4 83 00 -- 071840
FF 2E 1A 2E 36 FF 2E 1A 30 36 FF 2E 01 6A FF 6A -- 071850
0C C4 83 00 5C 93 FD 9A 1A 2A 36 FF 2E 1A 2C 36 -- 071860
8B 0A C4 83 00 5C ED 6E 9A 50 EE 46 8D 16 50 52 -- 071870
EE 46 8D 16 1D 74 00 14 3D 34 74 00 02 3D FA 46 -- 071880
9A FC 76 FF EC 46 89 04 C4 83 00 5C 94 D5 9A 50 -- 071890
05 C7 1A 32 3E C5 2E 1B EB 02 C4 83 00 44 85 56 -- 0718A0
1A 32 3E C5 2E 09 EB 00 02 05 C7 0A 7E C5 00 01 -- 0718B0
C4 83 00 5C 94 D5 9A 50 EE 46 8D 16 00 00 05 C7 -- 0718C0
04 6A 00 00 02 C8 57 56 CB 5E 5F C9 EC 46 89 04 -- 0718D0
45 89 0A 7E C5 04 C4 83 00 64 4E A1 9A 01 00 68 -- 0718E0
9A 50 FE 46 89 00 01 B8 11 75 C2 0B 04 55 89 02 -- 0718F0
05 8B 1A 36 3E C5 2E 75 EB 02 C4 83 00 64 59 DC -- 071900
46 8B 0A 7E C5 00 01 FE 46 C7 05 89 0A 7E C5 40 -- 071910
03 26 02 E7 C1 FE 7E 8B 0A 76 C4 59 7F 05 3B FE -- 071920
3E 03 2E E7 D1 FE 7E 8B 05 89 04 5C 8E 26 02 7C -- 071930
7E 8B 15 75 00 7F 3D 05 8B 1A 3C 1E 8E 2E 1A 3A -- 071940
7F 02 45 C7 04 5C 8E 26 02 7C 03 26 02 E7 C1 FE -- 071950
02 7C 03 26 02 E7 C1 FE 7E 8B 0A 76 C4 16 EB 00 -- 071960
```

503

EP 0 533 348 A2

```
5F  C9  9D  EB  FE  46  FF  00  7E  02  45  C7  04  5C  8E  26  --  071970
0A  7E  C5  00  00  FC  46  C7  00  00  04  C8  57  56  CB  5E  --  071980
1A  3E  3E  C5  2E  26  7E  00  FE  7E  83  FE  46  89  05  8B  --  071990
6A  FE  76  FF  50  FC  46  8D  16  15  74  05  3B  FE  46  8B  --  0719A0
EB  FE  4E  FF  0A  C4  83  00  64  40  D0  9A  01  F6  68  03  --  0719B0
5E  5F  C9  05  89  0A  7E  C5  05  8B  1A  3E  3E  C5  2E  D4  --  0719C0
46  3E  C5  2E  00  00  FE  46  C7  00  00  02  C8  57  56  CB  --  0719D0
4E  3E  C5  2E  1D  D9  9B  1A  42  3E  C5  2E  05  D9  9B  1A  --  0719E0
56  3E  C5  2E  1D  D9  9B  1A  4A  3E  C5  2E  05  D9  9B  1A  --  0719F0
C5  2E  1D  D9  9B  1A  52  3E  C5  2E  05  D9  9B  1A  01  FE  --  071A00
8D  16  1D  D9  9B  1A  5A  3E  C5  2E  05  D9  9B  1A  5E  3E  --  071A10
68  04  6A  1A  42  36  FF  2E  1A  44  36  FF  2E  50  FE  46  --  071A20
1F  74  00  FE  7E  83  0C  C4  83  00  64  40  D0  9A  01  F8  --  071A30
59  FE  9A  FE  76  FF  0A  74  00  3D  83  1A  62  3E  C5  2E  --  071A40
C5  02  C4  83  00  44  56  66  9A  FE  76  FF  08  EB  00  64  --  071A50
00  18  C8  57  56  CB  5E  5F  C9  9B  00  00  05  C7  0A  7E  --  071A60
ED  46  C6  03  EC  46  C6  02  EB  46  C6  01  EA  46  C6  00  --  071A70
F1  46  C6  07  F0  46  C6  06  EF  46  C6  05  EE  46  C6  04  --  071A80
F5  46  C6  0B  F4  46  C6  0A  F3  46  C6  09  F2  46  C6  08  --  071A90
F9  46  C6  0F  F8  46  C6  0E  F7  46  C6  0D  F6  46  C6  0C  --  071AA0
46  89  00  A0  B8  50  E8  46  8D  16  00  00  E8  46  C7  10  --  071AB0
08  C4  83  00  4C  00  2B  9A  50  FE  46  89  C0  2B  50  FC  --  071AC0
C4  83  00  64  59  DC  9A  E8  76  FF  0B  74  00  E8  7E  83  --  071AD0
16  50  EA  46  8D  16  50  E8  46  8D  16  00  FB  46  C6  02  --  071AE0
43  68  0A  6A  00  6A  00  6A  01  6A  10  6A  50  FB  46  8D  --  071AF0
FF  0B  74  00  E8  7E  83  18  C4  83  00  64  40  D0  9A  01  --  071B00
57  56  CB  5E  5F  C9  02  C4  83  00  64  59  DC  9A  E8  76  --  071B10
1D  D9  9B  0E  7E  C5  14  45  DF  9B  0A  7E  C5  EC  8B  55  --  071B20
76  C4  08  5D  D9  9B  0E  7E  C5  16  45  DF  9B  0A  7E  C5  --  071B30
ED  A7  9A  50  48  10  44  03  26  14  45  8B  0A  7E  C5  0A  --  071B40
C5  0A  76  C4  04  5D  D9  9B  0E  7E  C5  02  C4  83  00  5C  --  071B50
00  5C  ED  A7  9A  50  48  12  44  03  26  16  45  8B  0A  7E  --  071B60
56  CB  5E  5F  C9  9B  0C  5D  D9  9B  0E  7E  C5  02  C4  83  --  071B70
83  1A  66  3E  C5  2E  00  02  FE  46  C7  00  00  0A  C8  57  --  071B80
9B  1A  6A  06  DF  2E  9B  00  01  FE  46  C7  05  74  00  3D  --  071B90
9B  05  D9  9B  0A  7E  C5  F6  5E  DD  9B  1A  6C  0E  DC  2E  --  071BA0
08  C4  83  00  5C  ED  F9  9A  00  5C  ED  99  9A  F6  46  DC  --  071BB0

0E  7E  C5  02  C4  83  00  5C  ED  A7  9A  50  FE  7E  F7  99  --  071BC0
9B  1A  6C  0E  DC  2E  9B  1A  6A  06  DF  2E  9B  1D  D9  9B  --  071BD0
99  9A  F6  46  DC  9B  04  45  D9  9B  0A  7E  C5  F6  5E  DD  --  071BE0
50  FE  7E  F7  99  08  C4  83  00  5C  ED  F9  9A  00  5C  ED  --  071BF0
5D  D9  9B  0E  7E  C5  02  C4  83  00  5C  ED  A7  9A  01  FE  --  071C00
5E  DD  9B  1A  6C  0E  DC  2E  9B  1A  6A  06  DF  2E  9B  04  --  071C10
5C  ED  99  9A  F6  46  DC  9B  08  45  D9  9B  0A  7E  C5  F6  --  071C20
A7  9A  50  FE  7E  F7  99  08  C4  83  00  5C  ED  F9  9A  00  --  071C30
DF  2E  9B  08  5D  D9  9B  0E  7E  C5  02  C4  83  00  5C  ED  --  071C40
0A  7E  C5  F6  5E  DD  9B  1A  6C  0E  DC  2E  9B  1A  6A  06  --  071C50
ED  F9  9A  00  5C  ED  99  9A  F6  46  DC  9B  0C  45  D9  9B  --  071C60
83  00  5C  ED  A7  9A  50  FE  7E  F7  99  08  C4  83  00  5C  --  071C70
57  56  CB  5E  5F  C9  9B  0C  5D  D9  9B  0E  7E  C5  02  C4  --  071C80
1C  D8  26  9B  05  D9  9B  0A  7E  C5  0E  76  C4  EC  8B  55  --  071C90
05  D9  9B  0A  7E  C5  0E  76  C4  46  72  00  5C  ED  94  9A  --  071CA0
C5  0E  76  C4  31  77  00  5C  ED  94  9A  04  5C  D8  26  9B  --  071CB0
00  5C  ED  94  9A  08  5C  D8  26  9B  04  45  D9  9B  0A  7E  --  071CC0
5C  D8  26  9B  04  45  D9  9B  0A  7E  C5  0E  76  C4  1B  72  --  071CD0
9B  C0  2B  02  EB  00  01  B8  05  77  00  5C  ED  94  9A  0C  --  071CE0
9B  0A  7E  C5  0E  76  C4  EC  8B  55  57  56  CB  5E  5F  C9  --  071CF0
76  C4  41  77  00  5C  ED  94  9A  04  5C  D8  26  9B  05  D9  --  071D00
ED  94  9A  0C  5C  D8  26  9B  08  45  D9  9B  0A  7E  C5  0E  --  071D10
```

504

```
26  9B  04  45  D9  9B  0A  7E  C5  0E  76  C4  2B  77  00  5C  --  071D20
9B  0A  7E  C5  0E  76  C4  16  72  00  5C  ED  94  9A  1C  D8  --  071D30
2B  04  73  00  5C  ED  94  9A  08  5C  D8  26  9B  0C  45  D9  --  071D40
00  08  C8  57  56  CB  5E  5F  C9  9B  00  01  B8  03  EB  C0  --  071D50
9B  24  D8  26  9B  04  45  D9  9B  0E  7E  C5  0E  76  C4  00  --  071D60
F8  5E  D9  9B  08  64  D8  26  9B  0C  45  D9  9B  FC  5E  D9  --  071D70
ED  94  9A  1C  D8  26  9B  05  D9  9B  0A  7E  C5  12  76  C4  --  071D80
C5  05  D9  9B  12  7E  C5  03  EB  0A  7E  C5  05  72  00  5C  --  071D90
9B  04  45  D9  9B  0A  7E  C5  12  76  C4  1D  D9  9B  0E  7E  --  071DA0
D9  9B  0A  7E  C5  09  72  00  5C  ED  94  9A  08  5C  D8  26  --  071DB0
D9  9B  0E  7E  C5  08  45  D9  9B  12  7E  C5  07  EB  04  45  --  071DC0
5D  D9  9B  04  D8  26  9B  FC  46  D9  9B  0E  76  C4  08  5D  --  071DD0
C9  9B  0C  5D  D9  9B  08  44  D8  26  9B  F8  46  D9  9B  04  --  071DE0
7E  C5  05  D9  9B  0A  7E  C5  EC  8B  55  57  56  CB  5E  5F  --  071DF0
04  45  D9  9B  0A  7E  C5  1D  D9  9B  05  D8  9B  0E  01  FE  --  071E00
D9  9B  0A  7E  C5  08  5D  D9  9B  08  45  D8  9B  0E  7E  C5  --  071E10
9B  0A  7E  C5  04  5D  D9  9B  04  45  D8  9B  0E  7E  C5  05  --  071E20
C9  9B  0C  5D  D9  9B  0C  45  D8  9B  0E  7E  C5  04  45  D9  --  071E30
9B  E8  D9  9B  0A  7E  C5  00  00  22  C8  57  56  CB  5E  5F  --  071E40
76  C4  F6  5E  DD  9B  EE  D9  9B  EE  5E  DD  9B  62  75  D8  --  071E50
9A  F6  5E  DC  9B  00  B6  A4  D8  26  9B  44  45  D9  9B  0E  --  071E60
44  45  D9  9B  0A  7E  C5  0E  76  C4  12  76  00  5C  ED  94  --  071E70
D9  9B  0A  7E  C5  0E  76  C4  13  EB  00  B6  A4  D8  26  9B  --  071E80
9A  EE  5E  DC  9B  E0  D9  9B  00  B6  A4  D8  26  9B  44  45  --  071E90
66  75  D8  9B  E8  D9  9B  0A  7E  C5  62  73  00  5C  ED  94  --  071EA0
D9  9B  0E  76  C4  E6  5E  DD  9B  EE  D9  9B  DE  5E  DD  9B  --  071EB0
5C  ED  94  9A  E6  5E  DC  9B  00  B2  A4  D8  26  9B  48  45  --  071EC0
D8  26  9B  48  45  D9  9B  0A  7E  C5  0E  76  C4  12  76  00  --  071ED0
9B  48  45  D9  9B  0A  7E  C5  0E  76  C4  13  EB  00  B2  A4  --  071EE0
5C  ED  94  9A  DE  5E  DC  9B  E0  D9  9B  00  B2  A4  D8  26  --  071EF0
5F  C9  9B  FE  46  89  C0  2B  02  EB  00  01  B8  05  73  00  --  071F00
C4  F6  5E  DD  9B  EE  D9  9B  00  00  1A  C8  57  56  CB  5E  --  071F10
F6  5E  DC  9B  24  D8  26  9B  05  D9  9B  0A  7E  C5  0E  76  --  071F20
05  D9  9B  0A  7E  C5  0E  76  C4  0F  76  00  5C  ED  94  9A  --  071F30
9B  05  D9  9B  0A  7E  C5  0E  76  C4  10  EB  24  D8  26  9B  --  071F40
5C  ED  94  9A  1A  6C  1E  DC  2E  9B  E0  D9  9B  24  D8  26  --  071F50

D9  9B  E6  5E  D9  9B  04  45  D9  9B  0E  7E  C5  65  73  00  --  071F60
9B  04  45  D9  9B  0A  7E  C5  0E  76  C4  EE  5E  DD  9B  EE  --  071F70
C4  11  76  00  5C  ED  94  9A  EE  5E  DC  9B  04  64  D8  26  --  071F80
12  EB  04  64  D8  26  9B  04  45  D9  9B  0A  7E  C5  0E  76  --  071F90
9B  04  64  D8  26  9B  04  45  D9  9B  0A  7E  C5  0E  76  C4  --  071FA0
5C  ED  94  9A  1A  6C  1E  DC  2E  9B  E6  76  D8  9B  E0  D9  --  071FB0
FE  7E  83  FE  46  89  C0  2B  02  EB  00  01  B8  05  73  00  --  071FC0
0E  76  C4  F6  5E  DD  9B  EE  D9  9B  00  BB  E9  03  75  00  --  071FD0
F6  5E  DC  9B  08  64  D8  26  9B  08  45  D9  9B  0A  7E  C5  --  071FE0
45  D9  9B  0A  7E  C5  0E  76  C4  11  76  00  5C  ED  94  9A  --  071FF0
0A  7E  C5  0E  76  C4  12  EB  08  64  D8  26  9B  08  01  FE  --  072000
1E  DC  2E  9B  E0  D9  9B  08  64  D8  26  9B  08  45  D9  9B  --  072010
0C  45  D9  9B  0E  7E  C5  65  73  00  5C  ED  94  9A  1A  6C  --  072020
7E  C5  0E  76  C4  EE  5E  DD  9B  EE  D9  9B  E6  5E  D9  9B  --  072030
94  9A  EE  5E  DC  9B  0C  64  D8  26  9B  0C  45  D9  9B  0A  --  072040
9B  0C  45  D9  9B  0A  7E  C5  0E  76  C4  11  76  00  5C  ED  --  072050
0C  45  D9  9B  0A  7E  C5  0E  76  C4  12  EB  0C  64  D8  26  --  072060
1E  DC  2E  9B  E6  76  D8  9B  E0  D9  9B  0C  64  D8  26  9B  --  072070
C0  2B  02  EB  00  01  B8  05  73  00  5C  ED  94  9A  1A  6C  --  072080
00  22  C8  57  56  CB  5E  5F  C9  9B  FE  46  8B  FE  46  89  --  072090
C4  F6  5E  DD  9B  EE  D9  9B  EE  5E  DD  9B  E8  D9  9B  00  --  0720A0
F6  5E  DC  9B  24  D8  26  9B  05  D9  9B  0A  7E  C5  0E  76  --  0720B0
05  D9  9B  0A  7E  C5  0E  76  C4  0F  76  00  5C  ED  94  9A  --  0720C0
```

505

```
9B  05  D9  9B  0A  7E  C5  0E  76  C4  10  EB  24  D8  26  9B  --  0720D0
73  00  5C  ED  94  9A  EE  5E  DC  9B  E0  D9  9B  24  D8  26  --  0720E0
C4  E6  5E  DD  9B  EE  D9  9B  DE  5E  DD  9B  E8  D9  9B  5B  --  0720F0
DC  9B  04  64  D8  26  9B  04  45  D9  9B  0A  7E  C5  0E  76  --  072100
9B  0A  7E  C5  0E  76  C4  11  76  00  5C  ED  94  9A  E6  5E  --  072110
0A  7E  C5  0E  76  C4  12  EB  04  64  D8  26  9B  04  45  D9  --  072120
DE  5E  DC  9B  E0  D9  9B  04  64  D8  26  9B  04  45  D9  9B  --  072130
46  89  C0  2B  02  EB  00  01  B8  05  73  00  5C  ED  94  9A  --  072140
5E  DD  9B  E8  D9  9B  00  B6  E9  03  75  00  FE  7E  83  FE  --  072150
D9  9B  0A  7E  C5  0E  76  C4  F6  5E  DD  9B  EE  D9  9B  EE  --  072160
00  5C  ED  94  9A  F6  5E  DC  9B  08  64  D8  26  9B  08  45  --  072170
64  D8  26  9B  08  45  D9  9B  0A  7E  C5  0E  76  C4  11  76  --  072180
D8  26  9B  08  45  D9  9B  0A  7E  C5  0E  76  C4  12  EB  08  --  072190
5B  73  00  5C  ED  94  9A  EE  5E  DC  9B  E0  D9  9B  08  64  --  0721A0
76  C4  E6  5E  DD  9B  EE  D9  9B  DE  5E  DD  9B  E8  D9  9B  --  0721B0
5E  DC  9B  0C  64  D8  26  9B  0C  45  D9  9B  0A  7E  C5  0E  --  0721C0
D9  9B  0A  7E  C5  0E  76  C4  11  76  00  5C  ED  94  9A  E6  --  0721D0
9B  0A  7E  C5  0E  76  C4  12  EB  0C  64  D8  26  9B  0C  45  --  0721E0
9A  DE  5E  DC  9B  E0  D9  9B  0C  64  D8  26  9B  0C  45  D9  --  0721F0
89  C0  2B  02  EB  00  01  B8  05  73  00  5C  ED  94  01  FE  --  072200
00  00  10  C8  57  56  CB  5E  5F  C9  9B  FE  46  8B  FE  46  --  072210
DD  9B  EE  D9  9B  F0  5E  D9  9B  04  45  D9  9B  0A  7E  C5  --  072220
DC  9B  04  64  D8  26  9B  04  45  D9  9B  0E  76  C4  F8  5E  --  072230
9B  0A  7E  C5  0E  76  C4  11  76  00  5C  ED  94  9A  F8  5E  --  072240
0A  7E  C5  0E  76  C4  12  EB  04  64  D8  26  9B  04  45  D9  --  072250
F0  76  D8  9B  E0  D9  9B  04  64  D8  26  9B  04  45  D9  9B  --  072260
0E  76  C4  1B  73  00  5C  ED  94  9A  1A  6C  1E  DC  2E  9B  --  072270
5C  ED  94  9A  0C  5C  D8  26  9B  0C  45  D9  9B  0A  7E  C5  --  072280
9B  0C  45  D9  9B  0A  7E  C5  75  EB  00  01  B8  78  77  00  --  072290
45  D9  9B  0E  76  C4  F8  5E  DD  9B  EE  D9  9B  F0  5E  D9  --  0722A0
76  00  5C  ED  94  9A  F8  5E  DC  9B  0C  64  D8  26  9B  0C  --  0722B0
0C  64  D8  26  9B  0C  45  D9  9B  0A  7E  C5  0E  76  C4  11  --  0722C0
64  D8  26  9B  0C  45  D9  9B  0A  7E  C5  0E  76  C4  12  EB  --  0722D0
94  9A  1A  6C  1E  DC  2E  9B  F0  76  D8  9B  E0  D9  9B  0C  --  0722E0
9B  04  45  D9  9B  0A  7E  C5  0E  76  C4  16  73  00  5C  ED  --  0722F0

5F  C9  9B  C0  2B  88  76  00  5C  ED  94  9A  04  5C  D8  26  --  072300
C5  2E  6A  45  D9  9B  0A  7E  C5  EC  8B  55  57  56  CB  5E  --  072310
6A  45  D9  9B  0A  7E  C5  0A  76  C4  1D  D9  9B  1A  46  3E  --  072320
0A  7E  C5  1D  D9  9B  1A  56  3E  C5  2E  72  44  D8  26  9B  --  072330
9B  0A  7E  C5  1D  D9  9B  1A  4E  3E  C5  2E  6E  45  D9  9B  --  072340
1D  D9  9B  1A  5E  3E  C5  2E  76  44  D8  26  9B  6E  45  D9  --  072350
C5  2E  10  46  8B  00  00  02  C8  57  56  CB  5E  5F  C9  9B  --  072360
1A  76  36  FF  2E  14  76  FF  16  76  FF  05  88  1A  74  3E  --  072370
C5  0E  C4  83  00  64  40  D0  9A  6E  6A  05  6A  01  6A  57  --  072380
C4  83  00  64  59  FE  9A  35  FF  0A  74  00  3D  83  14  7E  --  072390
74  00  0E  7E  83  3B  75  00  3D  83  1A  78  3E  C5  2E  02  --  0723A0
D0  9A  01  F5  68  03  6A  0E  76  FF  50  14  46  8D  16  35  --  0723B0
05  89  1A  78  3E  C5  2E  0E  46  8B  0A  C4  83  00  64  40  --  0723C0
FE  9A  14  76  FF  16  76  FF  0E  74  14  46  0B  16  46  8B  --  0723D0
4C  0F  EE  9A  0A  76  FF  0C  76  FF  04  C4  83  00  64  59  --  0723E0
C2  9A  12  76  FF  50  FE  46  89  00  01  B8  04  C4  83  00  --  0723F0
C5  2E  1A  74  00  0E  7E  83  04  C4  83  00  5C  B4  01  FE  --  072400
57  1A  7A  36  FF  2E  0E  75  0E  46  3B  05  8B  1A  78  3E  --  072410
26  C8  57  56  CB  5E  5F  C9  04  C4  83  00  4C  06  B7  9A  --  072420
34  ED  BA  9A  50  F0  46  8D  16  00  00  EA  46  C7  00  00  --  072430
D9  9B  DA  5E  DD  9B  1A  04  06  DF  2E  9B  04  C4  83  00  --  072440
45  D9  9B  0A  7E  C5  E2  5E  DD  9B  F0  66  D8  9B  F4  46  --  072450
46  D9  9B  EC  5E  D9  9B  DA  4E  DC  9B  E2  76  DC  9B  72  --  072460
45  D8  9B  EC  46  D9  9B  72  5D  D9  9B  72  45  D8  9B  EC  --  072470
```

506

```
00 6A 16 6A 00 6A 50 EA 46 8D 16 76 5D D9 9B 76 -- 072480
EC 46 D9 9B 0E C4 83 00 4C 10 41 9A 57 0C 76 FF -- 072490
9B EC 46 D9 9B 72 5D D9 9B 72 6D D8 9B 0A 7E C5 -- 0724A0
20 C8 57 56 CB 5E 5F C9 9B 76 5D D9 9B 76 6D D8 -- 0724B0
9B EE D9 9B 00 01 FC 46 C7 00 00 FE 46 C7 00 00 -- 0724C0
D9 9B F4 5E D9 9B 6A 45 D9 9B 0A 7E C5 E4 5E D9 -- 0724D0
D9 9B 72 45 D8 9B F4 46 D9 9B EC 5E D9 9B 6E 45 -- 0724E0
46 C6 F0 5E D9 9B 76 45 D8 9B EC 46 D9 9B F8 5E -- 0724F0
0E 74 00 10 7E 83 00 EA 46 C6 00 E9 46 C6 02 E8 -- 072500
8D 16 19 EB 04 C4 83 00 4C 11 06 9A 57 0C 76 FF -- 072510
9A 0A 76 FF 0C 76 FF 00 6A 16 6A 00 6A 50 FE 46 -- 072520
46 8D 16 26 74 00 0E 7E 83 0E C4 83 00 4C 10 41 -- 072530
83 00 64 40 D0 9A 01 F6 68 03 6A 0E 76 FF 50 FE -- 072540
00 64 59 FE 9A FE 76 FF 0B 74 00 FE 7E 83 0A C4 -- 072550
68 04 6A 50 E0 46 8D 16 50 FE 46 8D 16 02 C4 83 -- 072560
E2 46 88 E0 46 8B 0C C4 83 00 64 40 D0 9A 02 D1 -- 072570
36 FF 2E 50 FE 46 8D 16 13 05 C6 1A 74 3E C5 2E -- 072580
C4 83 00 64 40 D0 9A 6E 6A 05 6A 01 6A 57 1A 76 -- 072590
50 E8 46 8D 16 50 E4 46 8D 16 50 FE 46 8D 16 0E -- 0725A0
68 0B 6A FC 76 FF 50 F4 46 8D 16 50 EC 46 8D 16 -- 0725B0
16 50 FE 46 8D 16 1A C4 83 00 64 40 D0 9A 00 CC -- 0725C0
83 00 64 40 D0 9A 6E 6A 05 6A 01 6A 50 E2 46 8D -- 0725D0
FE 46 C7 00 00 02 C8 57 56 CB 5E 5F C9 9B 0E C4 -- 0725E0
16 6A 35 FF 19 FC 3E C5 2E 50 FE 46 8D 16 00 00 -- 0725F0
FF 2E 1A 7E 36 FF 2E 35 FF 1A 80 3E C5 2E 01 FE -- 072600
56 CB 5E 5F C9 0E C4 83 00 4C 10 41 9A 1A 7C 36 -- 072610
2E 1A 86 36 FF 2E 00 00 FE 46 C7 00 00 02 C8 57 -- 072620
FF 3D 06 C4 83 00 5C D0 03 9A 0A 6A 1A 84 36 FF -- 072630
00 3D 80 1A 84 3E C5 2E 31 EB 12 60 B8 05 75 FF -- 072640
84 36 FF 2E 1A 86 36 FF 2E 22 EB 12 91 B8 05 75 -- 072650
00 01 B8 05 74 C0 0B 04 C4 83 00 5C D3 8B 9A 1A -- 072660
55 57 56 CB 5E 5F C9 C0 0B FE 46 89 C0 2B 02 EB -- 072670
FF 2E 1A 88 36 FF 2E 1A 8A 36 FF 2E 66 6A EC 8B -- 072680
0A C4 83 00 5C ED 6E 9A 1A 2A 36 FF 2E 1A 2C 36 -- 072690

2E 1A 30 36 FF 2E 1A 84 36 FF 2E 1A 86 36 FF 2E -- 0726A0
08 C4 83 00 64 5B B4 9A 50 00 03 05 1A 2E 06 8B -- 0726B0
83 00 64 5C 0E 9A 1A 84 36 FF 2E 1A 86 36 FF 2E -- 0726C0
86 36 FF 2E 57 56 02 45 88 1A 2E 3E C5 2E 04 C4 -- 0726D0
5F 00 8C 00 02 9A 0A 6A 00 6A 1A 84 36 FF 2E 1A -- 0726E0
00 00 FE 46 C7 00 00 02 C8 57 56 CB 5E 5F C9 5E -- 0726F0
46 89 04 C4 83 00 4C 14 43 9A 0A 76 FF 0C 76 FF -- 072700
75 00 3D 83 1A 62 3E C5 2E 28 74 00 FE 7E 83 FE -- 072710
83 00 64 28 52 9A 50 04 6A 00 6A 00 6A 00 6A 13 -- 072720
C9 02 C4 83 00 44 85 56 9A FE 76 FF 0B EB 0A C4 -- 072730
3D 05 8B 1A 8C 3E C5 2E EC 8B 55 57 56 CB 5E 5F -- 072740
00 54 9F F3 9A 0C EB 09 74 00 06 3D 07 74 00 02 -- 072750
00 14 C8 57 56 CB 5E 5F C9 00 14 B5 44 9A 05 EB -- 072760
8B 0C 76 FF 02 6A FF 6A 12 6A 00 00 EC 46 C7 00 -- 072770
5C 93 FD 9A 0A 76 FF 0C 76 FF 50 00 54 05 0A 46 -- 072780
00 5C ED 6E 9A 50 EE 46 8D 16 50 52 0C C4 83 00 -- 072790
D5 9A 50 EE 46 8D 16 EC 46 89 FC 46 8B 0A C4 83 -- 0727A0
C8 57 56 CB 5E 5F C9 EC 46 8B 04 C4 83 00 5C 94 -- 0727B0
D6 46 C7 00 00 D8 46 C7 00 01 DA 46 C7 00 00 2A -- 0727C0
01 D6 46 C7 05 74 00 3D 83 1A 66 3E C5 2E 00 02 -- 0727D0
F7 99 00 1C B8 F0 46 89 D6 7E F7 99 00 1C B8 00 -- 0727E0
B8 EC 46 89 D6 7E F7 99 03 E4 B8 F2 46 89 D6 7E -- 0727F0
50 D8 46 8D 16 EE 46 89 D6 7E F7 99 02 C4 01 FE -- 072800
0A C4 83 00 44 DE C0 9A DA 76 FF 50 DC 46 8D 16 -- 072810
01 02 45 F7 0A 7E C5 EC 8B 55 57 56 CB 5E 5F C9 -- 072820
```

507

```
7E C5 3D EB 00 01 05 C7 1A 90 3E C5 2E 0B 74 00 -- 072830
02 05 C7 1A 90 3E C5 2E 0B 74 00 02 02 45 F7 0A -- 072840
3E C5 2E 0B 74 00 04 02 45 F7 0A 7E C5 28 EB 00 -- 072850
00 08 02 45 F7 0A 7E C5 13 EB 00 03 05 C7 1A 90 -- 072860
56 CB 5E 5F C9 00 04 05 C7 1A 90 3E C5 2E 09 74 -- 072870
4C 45 89 0A 7E C5 10 56 8B 0E 46 8B EC 8B 55 57 -- 072880
DC 26 9B 18 45 DD 9B 0E 7E C5 0E 76 C4 4E 55 89 -- 072890
10 45 DD 9B 0E 7E C5 62 5D D9 9B 0A 7E C5 28 74 -- 0728A0
C5 0A 76 C4 66 5D D9 9B 0A 7E C5 20 74 DC 26 9B -- 0728B0
D9 9B 0A 7E C5 62 74 D8 26 9B 0C 45 DB 9B 0E 7E -- 0728C0
7E C5 66 74 D8 26 9B 08 45 DB 9B 0E 7E C5 44 5D -- 0728D0
9B E8 D9 9B 3C 5D D9 9B E8 D9 9B 48 5D D9 9B 0A -- 0728E0
45 88 0A 7E C5 E4 2A 06 45 8A 0E 7E C5 40 5D D9 -- 0728F0
0A 7E C5 62 74 D8 26 9B 3C 45 DB 9B 0E 7E C5 50 -- 072900
66 74 D8 26 9B 38 45 DB 9B 0E 7E C5 52 5D D9 9B -- 072910
9B 5A 5D D9 9B 44 45 D9 9B 56 5D D9 9B 0A 7E C5 -- 072920
D9 9B 6A 5D D9 9B EE D9 9B 5E 5D D9 9B 48 45 D9 -- 072930
45 D9 9B 72 5D D9 9B 5A 45 D9 9B 6E 5D D9 9B EE -- 072940
00 88 85 C7 7A 5D D9 9B EE D9 9B 76 5D D9 9B 5E -- 072950
7E C5 1C 75 00 03 3D 05 8B 1A 26 3E C5 2E 00 00 -- 072960
1A 90 3E C5 2E 00 0A 00 86 85 C7 02 3B 45 C6 0A -- 072970
3B 45 C6 0A 7E C5 0D EB 3A 45 88 0A 7E C5 05 8B -- 072980
06 C8 57 56 CB 5E 5F C9 9B 00 13 00 86 85 C7 00 -- 072990
FC 46 8D 16 50 FA 46 8D 16 00 00 FA 46 C7 00 00 -- 0729A0
46 8B 0C C4 83 00 64 40 D0 9A 02 D1 68 04 6A 50 -- 0729B0
3D 05 8B 1A 26 3E C5 2E 05 88 1A 74 3E C5 2E FC -- 0729C0
8D 16 13 FE 46 C6 04 EB 16 FE 46 C6 06 75 00 03 -- 0729D0
D0 9A 6E 6A 05 6A 01 6A 50 FE 46 8D 16 50 FA 46 -- 0729E0
76 FF 10 76 FF 50 FA 46 8D 16 0E C4 83 00 64 40 -- 0729F0
D0 9A 03 EC 68 06 6A 0A 76 FF 0C 76 FF 0E 01 FE -- 072A00
1A 76 36 FF 2E 50 FA 46 8D 16 10 C4 83 00 64 40 -- 072A10
00 64 40 D0 9A 6E 6A 05 6A 01 6A 1A 74 36 FF 2E -- 072A20
48 0A 46 8B EC 8B 55 57 56 CB 5E 5F C9 0E C4 83 -- 072A30

17 2E 17 22 A7 FF 2E D8 8B E0 D1 39 77 00 05 3D -- 072A40
9A 00 54 C8 1C 9A 17 4D 17 52 17 52 17 52 17 3A -- 072A50
00 03 3D 05 8B 1A 94 3E C5 2E 18 EB 00 4C 1A E1 -- 072A60
5F C9 00 14 B2 C5 9A 05 EB 00 54 9D 91 9A 0C 74 -- 072A70
4F 77 00 05 3D 48 0A 46 8B EC 8B 55 57 56 CB 5E -- 072A80
B3 17 B3 17 91 17 79 17 6D A7 FF 2E D8 8B E0 D1 -- 072A90
EB 00 4C 1B 57 9A 00 54 C8 1C 9A 17 85 17 A9 17 -- 072AA0
3E C5 2E 22 EB 00 14 7D C4 9A 00 54 C8 1C 9A 2E -- 072AB0
1F 9A 00 54 C8 1C 9A 16 74 00 03 3D 05 8B 1A 94 -- 072AC0
C9 00 14 39 6C 9A 00 54 C8 1C 9A 0A EB 00 2C B1 -- 072AD0
7E C5 00 00 FA 46 C7 00 00 06 C8 57 56 CB 5E 5F -- 072AE0
FA 46 8D 16 FE 46 89 02 45 8B FC 46 89 05 8B 0A -- 072AF0
40 D0 9A 01 51 68 05 6A 04 6A 50 FC 46 8D 16 50 -- 072B00
6A 50 FC 46 8D 16 50 FA 46 8D 16 0E C4 83 00 64 -- 072B10
5F C9 0E C4 83 00 64 40 D0 9A 01 51 68 05 6A 05 -- 072B20
10 45 8B 0A 7E C5 0E 76 C4 EC 8B 55 57 56 CB 5E -- 072B30
8B 17 75 12 44 3B 26 12 45 8B 20 75 10 44 3B 26 -- 072B40
75 16 44 3B 26 16 45 8B 0E 75 14 44 3B 26 14 45 -- 072B50
8B 55 57 56 CB 5E 5F C9 C0 2B 02 EB 00 01 B8 05 -- 072B60
98 3E C5 2E 05 8B 00 01 05 C7 1A 90 3E C5 2E EC -- 072B70
C9 04 C4 83 00 44 5A 4B 9A 00 6A 00 6A 05 88 1A -- 072B80
02 05 C7 1A 90 3E C5 2E EC 8B 55 57 56 CB 5E 5F -- 072B90
4B 9A 00 6A 00 6A 05 88 1A 98 3E C5 2E 05 8B 00 -- 072BA0
2E EC 8B 55 57 56 CB 5E 5F C9 04 C4 83 00 44 5A -- 072BB0
88 1A 98 3E C5 2E 05 8B 00 03 05 C7 1A 90 3E C5 -- 072BC0
5E 5F C9 04 C4 83 00 44 5A 4B 9A 00 6A 00 6A 05 -- 072BD0
```

```
8B 00 04 05 C7 1A 90 3E C5 2E EC 8B 55 57 56 CB -- 072BE0
44 5A 4B 9A 00 6A 00 6A 05 88 1A 98 3E C5 2E 05 -- 072BF0
00 00 02 C8 57 56 CB 5E 5F C9 04 C4 83 00 01 FE -- 072C00
00 09 3D 48 05 8B FE 46 89 05 8B 1A 8C 3E C5 2E -- 072C10
18 19 2D 19 26 18 FD A7 FF 2E D8 8B E0 D1 53 77 -- 072C20
9A 19 1F 19 3B 19 47 19 47 19 34 19 11 19 42 19 -- 072C30
A8 12 9A 28 EB 00 2C 4B 4C 9A 2F EB 00 14 37 A2 -- 072C40
00 2C AE 9D 9A 1A EB 00 4C F0 04 9A 21 EB 00 34 -- 072C50
05 EB 00 1C 89 B2 9A 0C EB 00 14 7F B8 9A 13 EB -- 072C60
C7 00 00 02 C8 57 56 CB 5E 5F C9 00 34 6A 53 9A -- 072C70
02 3D 00 02 2D 05 8B 1A 8C 3E C5 2E 00 00 FE 46 -- 072C80
19 74 19 82 19 6E A7 FF 2E D8 8B E0 D1 22 77 00 -- 072C90
05 EB 00 34 6B C0 9A 0C EB 00 2C 69 21 9A 19 7B -- 072CA0
75 00 03 3D 05 8B 1A 26 3E C5 2E 00 2C AA 7A 9A -- 072CB0
1A 74 3E C5 2E 08 EB 0B 05 C6 1A 74 3E C5 2E 0A -- 072CC0
36 FF 2E 1A 76 36 FF 2E 50 FE 46 8D 16 16 05 C6 -- 072CD0
0E C4 83 00 64 40 D0 9A 6E 6A 05 6A 01 6A 1A 74 -- 072CE0
C4 83 00 64 59 DC 9A FE 76 FF 0B 74 00 FE 7E 83 -- 072CF0
40 D0 9A 01 2F 68 03 6A 07 6A 50 FE 46 8D 16 02 -- 072D00
DC 9A FE 76 FF 0B 74 00 FE 7E 83 0A C4 83 00 64 -- 072D10
91 0E 00 3C 91 10 CB 5E 5F C9 02 C4 83 00 64 59 -- 072D20
00 3C B3 16 3F FA 8F 5C 28 F5 C2 8F 00 02 00 3C -- 072D30
00 3C B3 14 00 3C 92 54 00 3C 92 52 00 3C B4 2A -- 072D40
00 3C 95 62 00 3C 95 0E 00 3C B3 24 00 3C B3 2A -- 072D50
00 3C 96 CE 00 3C 96 DC 00 3C 96 D4 00 3C 96 D0 -- 072D60
00 3C 92 40 00 3C 91 3A 00 3C 92 38 00 3C 91 32 -- 072D70
00 3C 92 44 00 3C 91 3E 00 3C 92 3C 00 3C 91 36 -- 072D80
C6 F7 A0 B5 ED 8D 00 64 00 3C B3 28 00 3C AE 54 -- 072D90
96 CC 00 3C 90 36 00 3C 86 9E 00 3C 91 18 3E B0 -- 072DA0
B3 20 00 3C 86 9A 00 3C 86 A2 00 6C 1C 06 00 3C -- 072DB0
2E EC 8B 55 57 56 00 3C 90 70 00 3C 96 CA 00 3C -- 072DC0
3D 83 32 02 3E C5 2E 32 74 00 3D 83 31 FE 3E C5 -- 072DD0

6A 00 6A 32 0A 36 FF 2E 32 0C 36 FF 2E 28 74 00 -- 072DE0
06 6A 35 FF 32 06 3E C5 2E 00 6A 06 6A 16 6A 00 -- 072DF0
5E 5F C9 14 C4 83 00 64 3D BA 9A 01 38 68 01 FE -- 072E00
12 74 00 3D 83 32 0E 3E C5 2E EC 8B 55 57 56 CB -- 072E10
83 00 5C 97 1E 9A 32 12 36 FF 2E 32 14 36 FF 2E -- 072E20
64 4A 0E 9A 10 74 00 3D 83 32 16 3E C5 2E 04 C4 -- 072E30
64 4A 0E 9A 05 EB 00 01 05 C7 32 16 3E C5 2E 00 -- 072E40
32 1E 3E C5 2E 28 75 00 3D 83 32 1A 3E C5 2E 00 -- 072E50
C4 83 00 4C 61 B4 9A 00 6A 1C 75 00 01 3D 05 8B -- 072E60
C7 32 1E 3E C5 2E 00 01 05 C7 32 22 3E C5 2E 02 -- 072E70
0E 3E C5 2E EC 8B 55 57 56 CB 5E 5F C9 00 00 05 -- 072E80
32 26 36 FF 2E 32 28 36 FF 2E 12 74 00 3D 83 32 -- 072E90
83 00 4C 27 B3 9A 00 6A 04 C4 83 00 5C 97 1E 9A -- 072EA0
22 3E C5 2E 00 54 39 71 9A 00 4C C2 49 9A 02 C4 -- 072EB0
D0 09 9A 00 44 CF 28 9A 13 75 00 01 3D 05 8B 32 -- 072EC0
32 2A 3E C5 2E 00 00 05 C7 32 22 3E C5 2E 00 44 -- 072ED0
75 00 3D 83 32 2E 3E C5 2E 1D 75 00 14 3D 05 8B -- 072EE0
64 28 52 9A D4 05 68 00 6A 00 6A 00 6A 00 6A 13 -- 072EF0
19 75 00 01 3D 05 8B 32 2E 3E C5 2E 0A C4 83 00 -- 072F00
FF 32 2A 3E C5 2E 0F 75 00 3D 83 32 32 3E C5 2E -- 072F10
05 C7 32 1E 3E C5 2E 02 C4 83 00 4C C3 DC 9A 35 -- 072F20
00 4C 1B 57 9A EC 8B 55 57 56 CB 5E 5F C9 00 00 -- 072F30
83 32 36 3E C5 2E 00 00 26 C8 57 56 CB 5E 5F C9 -- 072F40
06 DD 2E 9B 06 EB 32 3A 06 DD 2E 9B 08 74 00 3D -- 072F50
32 4A 3E C5 2E 00 34 D9 7E 9A FA 5E D9 9B 32 42 -- 072F60
4E D8 9B 05 DF 9B 32 4E 3E C5 2E FE 46 89 05 8B -- 072F70
4E D8 9B 05 DF 9B 32 52 3E C5 2E F2 5E D9 9B FA -- 072F80
```

509

```
9A 50 F2 46 8D 16 50 EA 46 8D 16 F6 5E D9 9B FA -- 072F90
9B DA 5E D9 9B EA 46 D9 9B 08 C4 83 00 34 EE EE -- 072FA0
9B 05 DF 9B 32 56 3E C5 2E E2 5E D9 9B EE 46 D9 -- 072FB0
9B 05 DF 9B 32 5A 3E C5 2E F2 5E D9 9B FA 4E D8 -- 072FC0
F2 46 8D 16 50 EA 46 8D 16 F6 5E D9 9B FA 4E D8 -- 072FD0
5E D9 9B EA 46 D9 9B 08 C4 83 00 34 EE EE 9A 50 -- 072FE0
32 5E 3E C5 2E 57 56 E6 5E D9 9B EE 46 D9 9B DE -- 072FF0
16 50 52 02 55 8B 05 03 04 E0 C1 FE 46 8B 01 FE -- 073000
3E C5 2E 5E 5F 00 5C FE EC 9A 10 6A 50 DA 46 8D -- 073010
57 56 CB 5E 5F C9 9B 00 34 DA 22 9A 05 FF 32 4A -- 073020
2E 9B 08 74 00 3D 83 32 36 3E C5 2E 00 00 26 C8 -- 073030
FA 5E D9 9B 32 42 06 DD 2E 9B 06 EB 32 3A 06 DD -- 073040
2E FE 46 89 05 8B 32 62 3E C5 2E 00 34 D9 7E 9A -- 073050
2E F2 5E D9 9B FA 4E D8 9B 05 DF 9B 32 4E 3E C5 -- 073060
16 F6 5E D9 9B FA 4E D8 9B 05 DF 9B 32 52 3E C5 -- 073070
C4 83 00 34 EE EE 9A 50 F2 46 8D 16 50 EA 46 8D -- 073080
5E D9 9B EE 46 D9 9B DA 5E D9 9B EA 46 D9 9B 08 -- 073090
5E D9 9B FA 4E D8 9B 05 DF 9B 32 56 3E C5 2E E2 -- 0730A0
5E D9 9B FA 4E D8 9B 05 DF 9B 32 5A 3E C5 2E F2 -- 0730B0
00 34 EE EE 9A 50 F2 46 8D 16 50 EA 46 8D 16 F6 -- 0730C0
9B EE 46 D9 9B DE 5E D9 9B EA 46 D9 9B 08 C4 83 -- 0730D0
04 E0 C1 FE 46 8B 32 66 3E C5 2E 57 56 E6 5E D9 -- 0730E0
EC 9A 10 6A 50 DA 46 8D 16 50 52 02 55 8B 05 03 -- 0730F0
34 DA 22 9A 05 FF 32 62 3E C5 2E 5E 5F 00 5C FE -- 073100
32 62 3E C5 2E EC 8B 55 57 56 CB 5E 5F C9 9B 00 -- 073110
4A 3E C5 2E 32 5E 36 C4 2E 57 56 4D 74 00 3D 83 -- 073120
2E 50 52 02 54 8B 26 04 03 26 04 E0 C1 05 8B 32 -- 073130
05 8B 32 62 3E C5 2E 35 FF 02 75 FF 32 66 3E C5 -- 073140
32 62 3E C5 2E 5E 5F 00 5C FE EC 9A 50 04 E0 C1 -- 073150
05 C7 32 62 3E C5 2E 05 01 32 4A 3E C5 2E 05 8B -- 073160
00 E2 46 C7 00 00 22 C8 57 56 CB 5E 5F C9 00 00 -- 073170

83 00 64 4E 56 9A E2 76 FF 2E 74 02 28 7E 83 C8 -- 073180
15 75 DE 46 0B E0 46 8B E0 56 89 DE 46 89 02 C4 -- 073190
83 00 64 28 52 9A 02 6A 00 6A 00 6A 00 6A 00 6A -- 0731A0
C7 07 74 00 3D 83 32 36 3E C5 2E 02 7F E9 0A C4 -- 0731B0
00 34 D9 7E 9A 00 02 FC 46 C7 05 EB 00 01 FC 46 -- 0731C0
3B FE 46 8B 00 00 FE 46 C7 00 00 05 C7 20 7E C5 -- 0731D0
1C 7E 03 04 E7 C1 FE 7E 8B 02 34 E9 03 7C 1A 46 -- 0731E0
04 E7 C1 FE 7E 8B F4 5E D9 9B 05 D9 9B 1E 5E 8E -- 0731F0
46 8D 16 F8 5E D9 9B 08 45 D9 9B 1C 7E 03 01 FE -- 073200
9B 08 C4 83 00 34 EF 50 9A 50 F4 46 8D 16 50 EC -- 073210
08 C4 83 00 5C ED F9 9A 00 5C ED 99 9A EC 46 D9 -- 073220
5C ED F9 9A 00 5C ED 99 9A F0 46 D9 9B E4 46 89 -- 073230
1C 7E 03 04 E7 C1 FE 7E 8B E8 46 89 08 C4 83 00 -- 073240
E7 C1 FE 7E 8B F4 5E D9 9B 04 45 D9 9B 1E 5E 8E -- 073250
EC 46 8D 16 F8 5E D9 9B 0C 45 D9 9B 1C 7E 03 04 -- 073260
D9 9B 08 C4 83 00 34 EF 50 9A 50 F4 46 8D 16 50 -- 073270
89 08 C4 83 00 5C ED F9 9A 00 5C ED 99 9A EC 46 -- 073280
00 5C ED F9 9A 00 5C ED 99 9A F0 46 D9 9B E6 46 -- 073290
94 9A 0A 5E D8 9B E6 46 DF 9B EA 46 89 08 C4 83 -- 0732A0
9B E4 46 DF 9B FF 23 E9 FE 46 FF 06 73 00 5C ED -- 0732B0
D8 9B EA 46 DF 9B EB 77 00 5C ED 94 9A 0E 5E D8 -- 0732C0
5E D8 9B E8 46 DF 9B DC 72 00 5C ED 94 9A 12 5E -- 0732D0
0A 5E D8 9B E4 46 DF 9B CD 77 00 5C ED 94 9A 16 -- 0732E0
00 5C ED 99 9A 0A 46 D9 9B 14 73 00 5C ED 94 9A -- 0732F0
9B E6 46 DF 9B E4 46 89 08 C4 83 00 5C ED F9 9A -- 073300
99 9A 0E 46 D9 9B 14 76 00 5C ED 94 9A 0E 5E D8 -- 073310
DF 9B E6 46 89 08 C4 83 00 5C ED F9 9A 00 5C ED -- 073320
46 D9 9B 14 73 00 5C ED 94 9A 12 5E D8 9B E8 46 -- 073330
```

510

```
46 89 08 C4 83 00 5C ED F9 9A 00 5C ED 99 9A 12 -- 073340
14 76 00 5C ED 94 9A 16 5E D8 9B EA 46 DF 9B E8 -- 073350
C4 83 00 5C ED F9 9A 00 5C ED 99 9A 16 46 D9 9B -- 073360
8E 24 7E 03 03 E7 C1 3D 8B 20 7E C5 EA 46 89 08 -- 073370
3D 8B 20 7E C5 05 89 FC 7E F7 99 E4 46 8B 26 5E -- 073380
FC 7E F7 99 E6 46 8B 26 5E 8E 24 7E 03 03 E7 C1 -- 073390
5E 8E 24 7E 03 03 E7 C1 3D 8B 20 7E C5 02 45 89 -- 0733A0
3D 8B 20 7E C5 04 45 89 FC 7E F7 99 E8 46 8B 26 -- 0733B0
FC 7E F7 99 EA 46 8B 26 5E 8E 24 7E 03 03 E7 C1 -- 0733C0
FF E0 76 FF 28 76 FF 3C 74 02 28 7E 83 06 45 89 -- 0733D0
03 03 E0 C1 05 8B 20 7E C5 08 6A 08 EC 83 DE 76 -- 0733E0
6E 9A 50 00 08 05 C4 8B 16 50 52 26 56 8B 24 46 -- 0733F0
0E C4 83 00 4C 2D 60 9A 0A C4 83 00 5C ED 01 FE -- 073400
83 FE 98 E9 05 FF 20 7E C5 05 FF 32 6A 3E C5 2E -- 073410
00 64 4E E3 9A DE 76 FF E0 76 FF 0E 74 02 28 7E -- 073420
C8 57 56 CB 5E 5F C9 9B 00 34 DA 22 9A 04 C4 83 -- 073430
3E C5 2E 32 0A 36 FF 2E 32 0C 36 FF 2E 00 00 06 -- 073440
01 2D 68 02 6A 35 FF 32 06 3E C5 2E 35 FF 32 6E -- 073450
00 3D 83 32 0A 3E C5 2E 0C C4 83 00 64 3D BA 9A -- 073460
64 28 52 9A 35 FF 00 6A 00 6A 00 6A 00 6A 15 74 -- 073470
FF FF 05 C7 32 72 3E C5 2E 01 AC E9 0A C4 83 00 -- 073480
05 8B 32 2A 3E C5 2E 00 01 05 C7 32 76 3E C5 2E -- 073490
00 3D 83 32 7A 3E C5 2E 01 27 E9 03 74 00 15 3D -- 0734A0
32 7E 36 FF 2E 32 80 36 FF 2E 00 01 05 C7 73 75 -- 0734B0
36 FF 2E 32 0C 36 FF 2E 04 C4 83 00 64 2A 68 9A -- 0734C0
88 36 FF 2E 32 7E 36 FF 2E 32 80 36 FF 2E 32 0A -- 0734D0
32 82 36 FF 2E 32 84 36 FF 2E 32 86 36 FF 2E 32 -- 0734E0
83 32 0A 3E C5 2E 12 C4 83 00 44 D2 AC 9A 01 6A -- 0734F0
FF 2E 32 88 36 FF 2E 24 6A 01 2C E9 03 74 00 3D -- 073500
ED 6E 9A 32 8A 36 FF 2E 32 8C 36 FF 2E 32 86 36 -- 073510

2E 32 0A 36 FF 2E 32 0C 36 FF 2E 0A C4 83 00 5C -- 073520
00 44 DE C0 9A 01 6A 32 86 36 FF 2E 32 88 36 FF -- 073530
FF 22 E9 03 74 00 3D 83 32 0A 3E C5 2E 0A C4 83 -- 073540
2E 32 0C 36 FF 2E 38 74 00 3D 83 32 8E 3E C5 2E -- 073550
36 FF 2E 32 98 36 FF 2E 00 6A 00 6A 32 0A 36 FF -- 073560
84 36 FF 2E 32 92 36 FF 2E 32 94 36 FF 2E 32 96 -- 073570
16 C4 83 00 44 D8 B4 9A 01 6A 32 82 36 FF 2E 32 -- 073580
00 01 05 C7 32 9A 3E C5 2E 00 34 D9 7E 9A 3D EB -- 073590
6A 04 05 C6 FA 46 89 E4 2A 05 8A 32 9E 3E C5 2E -- 0735A0
00 54 C8 1C 9A 04 C4 83 00 44 5A 4B 9A 00 6A 00 -- 0735B0
2E 00 34 DA 22 9A 05 88 32 9E 3E C5 2E FA 46 8B -- 0735C0
3D 83 32 A6 3E C5 2E 0F 74 00 3D 83 32 A2 3E C5 -- 0735D0
89 05 8B 32 AA 3E C5 2E 00 4C 01 B5 9A 05 75 00 -- 0735E0
0A 36 FF 2E 32 0C 36 FF 2E 00 00 FE 46 C7 FC 46 -- 0735F0
9A 01 51 68 05 6A 04 6A 50 FC 46 8D 16 32 01 FE -- 073600
0A 36 FF 2E 32 0C 36 FF 2E 0E C4 83 00 64 40 D0 -- 073610
40 D0 9A 01 51 68 05 6A 05 6A 50 FC 46 8D 16 32 -- 073620
C7 00 00 06 C8 57 56 CB 5E 5F C9 0E C4 83 00 64 -- 073630
FF 2E 32 0C 36 FF 2E 00 00 FE 46 C7 00 00 FC 46 -- 073640
9A 01 51 68 05 6A 04 6A 50 FC 46 8D 16 32 0A 36 -- 073650
0A 36 FF 2E 32 0C 36 FF 2E 0E C4 83 00 64 40 D0 -- 073660
40 D0 9A 01 51 68 05 6A 05 6A 50 FC 46 8D 16 32 -- 073670
2E 0F 74 00 3D 83 32 A2 3E C5 2E 0E C4 83 00 64 -- 073680
C5 2E 00 4C 01 1C 9A 05 75 00 3D 83 32 A6 3E C5 -- 073690
3E C5 2E 00 85 E9 03 74 00 15 3D 05 8B 32 2A 3E -- 0736A0
0A 36 FF 2E 32 0C 36 FF 2E 19 74 00 3D 83 32 76 -- 0736B0
06 C4 83 00 4C 31 62 9A 50 FA 46 89 00 01 B8 32 -- 0736C0
00 6A 00 6A 00 6A 12 74 00 3D 83 32 0A 3E C5 2E -- 0736D0
7A 3E C5 2E 0A C4 83 00 64 28 52 9A 35 FF 00 6A -- 0736E0
```

511

```
32 0A 36 FF 2E 32 0C 36 FF 2E 3C 74 00 3D 83 32 -- 0736F0
2E 32 8C 36 FF 2E 32 AE 36 FF 2E 32 B0 36 FF 2E -- 073700
FF 2E 32 7E 36 FF 2E 32 80 36 FF 2E 32 8A 36 FF -- 073710
83 00 44 D8 B4 9A 01 6A 32 82 36 FF 2E 32 84 36 -- 073720
05 89 32 72 3E C5 2E 05 8B 32 2A 3E C5 2E 16 C4 -- 073730
FF 32 6E 3E C5 2E 32 0A 36 FF 2E 32 0C 36 FF 2E -- 073740
3D BA 9A 01 2C 68 02 6A 35 FF 32 06 3E C5 2E 35 -- 073750
6A 12 74 00 3D 83 32 0A 3E C5 2E 0C C4 83 00 64 -- 073760
C4 83 00 64 28 52 9A 35 FF 00 6A 00 6A 00 6A 00 -- 073770
2E 32 0C 36 FF 2E EC 8B 55 57 56 CB 5E 5F C9 0A -- 073780
32 06 3E C5 2E 35 FF 32 6E 3E C5 2E 32 0A 36 FF -- 073790
2E 0C C4 83 00 64 3D BA 9A 01 2D 68 02 6A 35 FF -- 0737A0
6A 00 6A 00 6A 00 6A 14 74 00 3D 83 32 0A 3E C5 -- 0737B0
3E C5 2E 0E EB 0A C4 83 00 64 28 52 9A 35 FF 00 -- 0737C0
56 CB 5E 5F C9 00 34 C0 30 9A FF FF 05 C7 32 72 -- 0737D0
32 72 3E C5 2E 05 8B 32 2A 3E C5 2E EC 8B 55 57 -- 0737E0
6E 3E C5 2E 32 0A 36 FF 2E 32 0C 36 FF 2E 05 89 -- 0737F0
2C 68 02 6A 35 FF 32 06 3E C5 2E 35 FF 32 01 FE -- 073800
3D 83 32 0A 3E C5 2E 0C C4 83 00 64 3D BA 9A 01 -- 073810
28 52 9A 35 FF 00 6A 00 6A 00 6A 00 6A 14 74 00 -- 073820
CB 5E 5F C9 00 34 C1 35 9A 05 EB 0A C4 83 00 64 -- 073830
D9 9B 05 DF 9B 32 B2 3E C5 2E 00 00 10 C8 57 56 -- 073840
C4 2E F8 5E D9 9B 05 DF 9B 32 B6 3E C5 2E F0 5E -- 073850
9A 50 48 04 03 26 05 8B 32 B2 3E C5 2E 32 BA 36 -- 073860
32 BE 36 C4 2E F4 5E D9 9B 02 C4 83 00 5C ED A7 -- 073870
5C ED A7 9A 50 48 04 03 26 05 8B 32 B6 3E C5 2E -- 073880
36 FF 2E 32 0C 36 FF 2E FC 5E D9 9B 02 C4 83 00 -- 073890
67 9A 01 6A 50 F0 46 8D 16 50 F0 46 8D 16 32 0A -- 0738A0
00 08 C8 57 56 CB 5E 5F C9 9B 0E C4 83 00 4C 2A -- 0738B0

C7 32 72 3E C5 2E 00 00 05 C7 32 C2 3E C5 2E 00 -- 0738C0
22 3E C5 2E 00 00 05 C7 32 C6 3E C5 2E FF FF 05 -- 0738D0
C5 2E 00 00 05 C7 32 CA 3E C5 2E 00 00 05 C7 32 -- 0738E0
00 00 05 C7 32 1A 3E C5 2E 00 00 05 C7 32 1E 3E -- 0738F0
32 D6 3E C5 2E 15 D9 9B 32 DA 3E C5 2E EE D9 9B -- 073900
32 CE 3E C5 2E 15 D9 9B 32 D2 3E C5 2E 15 D9 9B -- 073910
00 05 C7 32 DE 3E C5 2E 00 4C F1 7E 9A 1D D9 9B -- 073920
32 E2 3E C5 2E 00 44 D0 F8 9A 00 44 D0 EA 9A 00 -- 073930
0C 36 FF 2E 18 EB 00 4C C7 B7 9A 07 75 00 3D 83 -- 073940
64 40 D0 9A 6F 6A 03 6A 03 6A 32 0A 36 FF 2E 32 -- 073950
35 FF 0A 74 00 3D 83 32 0A 3E C5 2E 0A C4 83 00 -- 073960
89 32 62 3E C5 2E C0 2B 00 D3 E9 00 64 59 DC 9A -- 073970
89 05 8B 32 B2 3E C5 2E 05 89 32 4A 3E C5 2E 05 -- 073980
BA 3E C5 2E FC 46 89 05 8B 32 B6 3E C5 2E F8 46 -- 073990
8B 32 BE 3E C5 2E FA 46 89 48 05 03 F8 46 8B 32 -- 0739A0
3C CA 9A 50 F8 46 8D 16 FE 46 89 48 05 03 FC 46 -- 0739B0
6A 32 0A 36 FF 2E 32 0C 36 FF 2E 04 C4 83 00 54 -- 0739C0
2E 50 F8 46 8D 16 35 FF 32 4A 3E C5 2E 00 6A 00 -- 0739D0
00 64 3D BA 9A 01 32 68 06 6A 35 FF 32 06 3E C5 -- 0739E0
2E 00 6A 27 74 00 3D 83 32 E6 3E C5 2E 14 C4 83 -- 0739F0
32 EC 36 FF 2E 32 EE 36 FF 2E 32 F0 36 FF 01 FE -- 073A00
3E C5 2E 0A C4 83 00 5C 94 FB 9A 32 EA 36 FF 2E -- 073A10
00 44 CF 28 9A 00 4C C2 49 9A 00 00 05 C7 32 E6 -- 073A20
75 00 01 3D 05 8B 32 2E 3E C5 2E 00 44 D0 09 9A -- 073A30
02 C4 83 00 4C C3 DC 9A 35 FF 32 2A 3E C5 2E 0F -- 073A40
83 32 32 3E C5 2E EC 8B 55 57 56 CB 5E 5F C9 9B -- 073A50
74 00 3D 83 32 A2 3E C5 2E 00 84 E9 03 74 00 3D -- 073A60
32 0C 36 FF 2E 44 75 00 3D 83 32 A6 3E C5 2E 4E -- 073A70
6A 32 AE 36 FF 2E 32 B0 36 FF 2E 32 0A 36 FF 2E -- 073A80
00 6A 00 34 D9 7E 9A 0A C4 83 00 44 DE C0 9A 00 -- 073A90
```

512

```
9A 00 54 C8 1C 9A 04 C4 83 00 44 5A 4B 9A 00 6A -- 073AA0
2E 2C EB 00 00 05 C7 32 C6 3E C5 2E 00 34 DA 22 -- 073AB0
9A 6F 6A 03 6A 13 6A 32 0A 36 FF 2E 32 0C 36 FF -- 073AC0
74 00 3D 83 32 0A 3E C5 2E 0A C4 83 00 64 40 D0 -- 073AD0
56 CB 5E 5F C9 02 C4 83 00 64 59 DC 9A 35 FF B8 -- 073AE0
C7 07 74 00 3D 83 32 36 3E C5 2E 00 00 20 C8 57 -- 073AF0
32 A6 3E C5 2E 00 02 E4 46 C7 05 EB 00 01 E4 46 -- 073B00
3E C5 2E 32 F2 36 C4 2E 00 BE E9 03 75 00 3D 83 -- 073B10
05 8B 32 F2 3E C5 2E 07 7F 04 3B 26 05 8B 32 B6 -- 073B20
26 05 8B 32 B2 3E C5 2E 32 F6 36 C4 2E EC 46 89 -- 073B30
C4 2E E8 46 89 05 8B 32 F6 3E C5 2E 07 7F 04 3B -- 073B40
C4 2E 49 0C 03 26 0D 8B 32 F2 3E C5 2E 32 FA 36 -- 073B50
C1 3B 48 04 03 26 05 8B 32 B6 3E C5 2E 32 BE 36 -- 073B60
C4 2E 0A EB 32 F2 3E C5 2E 32 FA 36 C4 2E 0C 7E -- 073B70
46 89 48 04 03 26 05 8B 32 B6 3E C5 2E 32 BE 36 -- 073B80
0C 03 26 0D 8B 32 F6 3E C5 2E 32 FE 36 C4 2E EE -- 073B90
04 03 26 05 8B 32 B2 3E C5 2E 32 BA 36 C4 2E 49 -- 073BA0
8B 32 F6 3E C5 2E 32 FE 36 C4 2E 15 7E C1 3B 48 -- 073BB0
2E 32 BA 36 C4 2E 3C EB EA 46 89 48 04 03 26 05 -- 073BC0
E8 46 89 05 8B 32 B2 3E C5 2E E9 EB 32 B2 3E C5 -- 073BD0
8B 32 BA 3E C5 2E EC 46 89 05 8B 32 B6 3E C5 2E -- 073BE0
EC 46 8B 32 BE 3E C5 2E EA 46 89 48 05 03 E8 46 -- 073BF0
9A 50 E8 6E F7 E4 46 8B EE 46 89 48 05 03 01 FE -- 073C00
6E F7 E4 46 8B F0 5E D9 9B 02 C4 83 00 5C ED A7 -- 073C10
46 8B F8 5E D9 9B 02 C4 83 00 5C ED A7 9A 50 EC -- 073C20
5E D9 9B 02 C4 83 00 5C ED A7 9A 50 EA 6E F7 E4 -- 073C30
02 C4 83 00 5C ED A7 9A 50 EE 6E F7 E4 46 8B F4 -- 073C40
08 6A 55 75 00 3D 83 33 02 3E C5 2E FC 5E D9 9B -- 073C50

89 04 C4 83 00 64 4E A1 9A 35 FF 32 4A 3E C5 2E -- 073C60
2E 50 E6 46 8D 16 50 52 0A 76 FF E2 56 89 E0 46 -- 073C70
35 FF 32 4A 3E C5 2E 35 FF 02 75 FF 32 5E 3E C5 -- 073C80
00 08 05 C4 8B 16 50 F0 46 8D 16 10 6A 10 EC 83 -- 073C90
C4 83 00 4C 1E 44 9A 0A C4 83 00 5C ED 6E 9A 50 -- 073CA0
FF 32 4A 3E C5 2E 08 6A 00 4C 1D E4 9A 61 EB 20 -- 073CB0
FF E2 56 89 E0 46 89 04 C4 83 00 64 4E A1 9A 35 -- 073CC0
75 FF 32 5E 3E C5 2E 50 E6 46 8D 16 50 52 0A 76 -- 073CD0
16 10 6A 10 EC 83 35 FF 32 4A 3E C5 2E 35 FF 02 -- 073CE0
00 5C ED 6E 9A 50 00 08 05 C4 8B 16 50 F0 46 8D -- 073CF0
33 02 3E C5 2E 20 C4 83 00 4C 1E 44 9A 0A C4 83 -- 073D00
C4 83 00 54 3C CA 9A 50 E8 46 8D 16 00 00 05 C7 -- 073D10
76 FF E2 76 FF 32 0A 36 FF 2E 32 0C 36 FF 2E 04 -- 073D20
35 FF 32 06 3E C5 2E 50 E8 46 8D 16 E6 76 FF E0 -- 073D30
3E C5 2E 14 C4 83 00 64 3D BA 9A 01 32 68 06 6A -- 073D40
FF 00 6A 00 6A 00 6A 00 6A 14 74 00 3D 83 32 0A -- 073D50
33 06 3E C5 2E 35 EB 0A C4 83 00 64 28 52 9A 35 -- 073D60
FF E2 76 FF 16 EB 00 54 33 1D 9A 07 74 00 3D 83 -- 073D70
83 00 54 33 8C 9A 50 E8 46 8D 16 E6 76 FF E0 76 -- 073D80
04 C4 83 00 64 4E E3 9A E0 76 FF E2 76 FF 0A C4 -- 073D90
7E C5 10 76 C4 00 00 46 C8 57 56 CB 5E 5F C9 9B -- 073DA0
0C 76 C4 C2 5E DD 9B 24 D8 26 9B 04 45 D9 9B 10 -- 073DB0
9A C2 5E DC 9B 24 D8 26 9B 04 45 D9 9B 0C 7E C5 -- 073DC0
0C 45 D9 9B 10 7E C5 10 76 C4 2D 75 00 5C ED 94 -- 073DD0
9B 0C 7E C5 0C 76 C4 BA 5E DD 9B 08 64 D8 26 9B -- 073DE0
5C ED 94 9A BA 5E DC 9B 08 64 D8 26 9B 0C 45 D9 -- 073DF0
2E 01 32 E9 00 01 05 C7 14 7E C5 0A 74 00 01 FE -- 073E00
05 EB 00 01 CA 46 C7 07 74 00 3D 83 32 36 3E C5 -- 073E10
5C ED 99 9A 08 45 D9 9B 0C 7E C5 00 02 CA 46 C7 -- 073E20
9B 0C 7E C5 F4 46 89 08 C4 83 00 5C ED F9 9A 00 -- 073E30
89 08 C4 83 00 5C ED F9 9A 00 5C ED 99 9A 05 D9 -- 073E40
```

```
5C ED 99 9A 0C 45 D9 9B 0C 7E C5 F2 66 D1 F2 46 -- 073E50
9B 0C 7E C5 F8 46 89 08 C4 83 00 5C ED F9 9A 00 -- 073E60
08 C4 83 00 5C ED F9 9A 00 5C ED 99 9A 04 45 D9 -- 073E70
08 45 D9 9B 10 7E C5 F6 46 FF F6 66 D1 F6 46 89 -- 073E80
D0 46 89 08 C4 83 00 5C ED F9 9A 00 5C ED 99 9A -- 073E90
00 5C ED F9 9A 00 5C ED 99 9A 05 D9 9B 10 7E C5 -- 073EA0
0C 45 D9 9B 10 7E C5 CC 66 D1 CC 46 89 08 C4 83 -- 073EB0
D2 46 89 08 C4 83 00 5C ED F9 9A 00 5C ED 99 9A -- 073EC0
5C ED F9 9A 00 5C ED 99 9A 04 45 D9 9B 10 7E C5 -- 073ED0
0A 7E 83 CE 46 FF CE 66 D1 CE 46 89 08 C4 83 00 -- 073EE0
08 00 B8 F2 46 01 CA 7E F7 99 08 00 B8 16 75 00 -- 073EF0
CA 7E F7 99 08 00 B8 14 EB F6 46 01 CA 7E F7 99 -- 073F00
F0 46 C7 CE 46 01 CA 7E F7 99 08 00 B8 CC 46 01 -- 073F10
CC 46 8D 16 00 6A 00 6A 14 76 FF 16 76 FF 00 13 -- 073F20
C4 83 00 54 5C A2 9A 01 6A 13 6A 00 6A 00 6A 50 -- 073F30
B2 3E C5 2E 00 00 18 C8 57 56 CB 5E 5F C9 9B 14 -- 073F40
2E E8 5E DD 9B E8 D9 9B F0 5E D9 9B 05 DF 9B 32 -- 073F50
9B E8 66 DC 9B 05 DE 9B F0 46 D9 9B 32 BA 3E C5 -- 073F60
9B F8 5E D9 9B 05 DF 9B 32 B6 3E C5 2E F4 5E D9 -- 073F70
9B F8 46 D9 9B 32 BE 3E C5 2E E8 5E DD 9B E8 D9 -- 073F80
2E 32 0C 36 FF 2E FC 5E D9 9B E8 66 DC 9B 05 DE -- 073F90
00 6A 50 F0 46 8D 16 50 F0 46 8D 16 32 0A 36 FF -- 073FA0
55 57 56 CB 5E 5F C9 9B 0E C4 83 00 4C 2A 67 9A -- 073FB0
2A 3E C5 2E 7E 75 00 3D 83 32 E2 3E C5 2E EC 8B -- 073FC0
00 3D 83 32 8E 3E C5 2E 5F 75 00 15 3D 05 8B 32 -- 073FD0
00 6A 00 6A 32 0A 36 FF 2E 32 0C 36 FF 2E 38 74 -- 073FE0
2E 32 94 36 FF 2E 32 96 36 FF 2E 32 98 36 FF 2E -- 073FF0

32 82 36 FF 2E 32 84 36 FF 2E 32 92 36 FF 01 FE -- 074000
34 D9 7E 9A 22 EB 16 C4 83 00 44 D8 B4 9A 00 6A -- 074010
C8 1C 9A 04 C4 83 00 44 5A 4B 9A 00 6A 00 6A 00 -- 074020
FF 2E 00 4C 25 06 9A 05 EB 00 34 DA 22 9A 00 54 -- 074030
34 D9 7E 9A 27 EB 3D 6A 32 0A 36 FF 2E 32 0C 36 -- 074040
C8 1C 9A 04 C4 83 00 44 5A 4B 9A 00 6A 00 6A 00 -- 074050
0A 36 FF 2E 32 0C 36 FF 2E 00 34 DA 22 9A 00 54 -- 074060
2E 0A C4 83 00 64 40 D0 9A 6F 6A 03 6A 03 6A 32 -- 074070
00 64 59 DC 9A 35 FF 0C 74 00 3D 83 32 0A 3E C5 -- 074080
5F C9 00 00 05 C7 33 0A 3E C5 2E 09 EB 02 C4 83 -- 074090
B4 46 C7 C8 00 CA 46 C7 00 00 58 C8 57 56 CB 5E -- 0740A0
2E 00 AF 46 C6 00 B1 46 C6 00 00 B2 46 C7 00 00 -- 0740B0
05 EB 00 01 A8 46 C7 07 74 00 3D 83 32 36 3E C5 -- 0740C0
74 00 04 3D 05 8B 33 0E 3E C5 2E 00 02 A8 46 C7 -- 0740D0
AA 7E 83 00 13 AA 46 C7 05 EB 00 16 AA 46 C7 07 -- 0740E0
F7 0C 46 8B 0A 46 89 A8 6E F7 0A 46 8B 4F 75 16 -- 0740F0
46 8B 0E 46 89 A8 6E F7 0E 46 8B 0C 46 89 A8 6E -- 074100
33 12 3E F7 2E 99 0A 46 8B 10 46 89 A8 6E F7 10 -- 074110
8B BC 46 89 E0 D1 40 0A 46 2B 0C 46 8B 0A 56 29 -- 074120
00 0C AC 46 C7 0E 56 29 33 12 3E F7 2E 99 0E 46 -- 074130
00 06 B8 FA 8B 33 12 3E F7 2E 99 0A 46 8B 38 EB -- 074140
89 02 E0 C1 40 0A 46 2B 0C 46 8B 0A 46 01 C7 2B -- 074150
00 06 B8 FA 8B 33 12 3E F7 2E 99 0E 46 8B BC 46 -- 074160
CC 46 89 0A 46 8B 00 14 AC 46 C7 0E 46 01 C7 2B -- 074170
46 89 BC 76 F7 D2 2B CA 46 8B CE 46 89 0C 46 8B -- 074180
C4 46 03 C6 46 8B BE 46 89 C4 46 89 0E 46 8B C6 -- 074190
46 8B C0 46 89 40 0E 46 2B 10 46 8B C2 46 89 48 -- 0741A0
00 0C B4 46 C7 05 74 D2 0B 33 12 3E F7 2E 99 0E -- 0741B0
00 FF B8 0B 74 D2 0B 33 12 3E F7 2E 99 0E 46 8B -- 0741C0
46 3B BE 46 03 C0 46 8B B1 46 88 E4 2A AF 46 88 -- 0741D0
C4 46 8B C2 46 89 48 C0 46 03 BE 46 8B 0A 7D C2 -- 0741E0
40 C4 46 2B C2 46 8B D2 46 89 C2 46 8B D0 46 89 -- 0741F0
```

```
6A  32  0A  36  FF  2E  32  0C  36  FF  2E  B8  46  89  01  FE  --  074200
76  FF  12  76  FF  14  76  FF  50  CC  46  8D  16  00  6A  00  --  074210
46  89  BC  46  8B  14  C4  83  00  54  5C  A2  9A  03  6A  AA  --  074220
46  3B  BA  46  8B  00  00  BA  46  C7  00  00  C8  46  C7  B6  --  074230
46  8B  B1  46  88  E4  2A  AF  46  8A  00  DD  E9  03  7C  B8  --  074240
46  89  BA  6E  F7  BC  46  8B  B6  46  89  BC  6E  F7  40  BA  --  074250
13  AA  7E  83  00  8C  E9  03  72  B6  46  3B  C8  46  8B  C8  --  074260
46  8A  14  5E  8E  12  7E  03  C8  46  FF  C8  7E  8B  4F  75  --  074270
46  8A  12  7E  03  C8  46  FF  C8  7E  8B  05  88  E4  2A  B1  --  074280
46  8A  12  7E  03  C8  46  FF  C8  7E  8B  05  88  E4  2A  B1  --  074290
46  8A  12  7E  03  C8  46  FF  C8  7E  8B  05  88  E4  2A  B1  --  0742A0
EB  B1  46  88  D0  F7  E4  2A  B1  46  8A  05  88  E4  2A  B1  --  0742B0
14  5E  8E  12  7E  03  C8  7E  8B  11  75  00  16  7E  83  2E  --  0742C0
5E  8E  12  7E  03  C8  7E  8B  0F  EB  00  80  0D  98  05  8A  --  0742D0
8B  05  88  12  7E  03  C8  7E  8B  00  7F  25  98  05  8A  14  --  0742E0
00  B4  7E  83  06  BA  46  83  FF  69  E9  C8  46  01  AC  46  --  0742F0
2A  AF  46  8A  B4  46  89  C0  2B  02  EB  00  0C  B8  05  75  --  074300
AF  46  88  00  FF  B8  03  EB  C0  2B  04  75  00  FF  3D  E4  --  074310
0C  36  FF  2E  B2  46  89  B8  46  2B  BA  46  8B  FF  18  E9  --  074320
FF  50  CC  46  8D  16  00  6A  00  6A  32  0A  36  FF  2E  32  --  074330
83  00  54  5C  A2  9A  04  6A  AA  76  FF  12  76  FF  14  76  --  074340
03  C6  46  8B  C4  46  89  40  B2  46  03  C2  46  8B  14  C4  --  074350
7E  C4  46  3B  BE  46  03  C0  46  8B  C2  46  89  48  C4  46  --  074360
C5  2E  00  00  1A  C8  57  56  CB  5E  5F  C9  FE  66  E9  03  --  074370
C7  05  EB  00  01  E6  46  C7  07  74  00  3D  83  32  36  3E  --  074380
03  75  00  04  3D  05  8B  33  0E  3E  C5  2E  00  02  E6  46  --  074390

00  F1  E9  03  75  00  3D  83  32  6A  3E  C5  2E  00  FE  E9  --  0743A0
00  5C  ED  A7  9A  50  2D  F7  E6  46  8B  32  B2  3E  C5  2E  --  0743B0
F7  E6  46  8B  32  B6  3E  C5  2E  EE  5E  D9  9B  02  C4  83  --  0743C0
C4  2E  F6  5E  D9  9B  02  C4  83  00  5C  ED  A7  9A  50  2D  --  0743D0
6E  F7  48  04  03  26  05  8B  32  B2  3E  C5  2E  32  BA  36  --  0743E0
C4  2E  F2  5E  D9  9B  02  C4  83  00  5C  ED  A7  9A  50  E6  --  0743F0
48  04  03  26  05  8B  32  B6  3E  C5  2E  32  BE  36  01  FE  --  074400
FA  5E  D9  9B  02  C4  83  00  5C  ED  A7  9A  50  E6  6E  F7  --  074410
C4  83  00  64  4E  A1  9A  35  FF  32  4A  3E  C5  2E  08  6A  --  074420
FF  52  50  E8  46  89  00  01  B8  EC  56  89  EA  46  89  04  --  074430
FF  02  75  FF  32  5E  3E  C5  2E  50  FE  46  8D  16  EA  76  --  074440
46  8D  16  10  6A  10  EC  83  35  FF  32  4A  3E  C5  2E  35  --  074450
C4  83  00  5C  ED  6E  9A  50  00  08  05  C4  8B  16  50  EE  --  074460
9A  EA  76  FF  EC  76  FF  20  C4  83  00  4C  1E  44  9A  0A  --  074470
00  00  05  C7  32  6A  3E  C5  2E  04  C4  83  00  64  4E  E3  --  074480
15  9A  00  00  05  C7  09  74  00  3D  83  33  14  3E  C5  2E  --  074490
0C  7E  C5  EC  8B  55  57  56  CB  5E  5F  C9  9B  00  44  63  --  0744A0
FF  2E  70  75  00  3D  83  32  8E  3E  C5  2E  00  00  05  C7  --  0744B0
04  C4  83  00  64  2A  68  9A  32  92  36  FF  2E  32  94  36  --  0744C0
32  92  36  FF  2E  32  94  36  FF  2E  0C  76  FF  0E  76  FF  --  0744D0
2E  32  84  36  FF  2E  32  AE  36  FF  2E  32  B0  36  FF  2E  --  0744E0
C5  12  C4  83  00  44  D2  AC  9A  0A  76  FF  32  82  36  FF  --  0744F0
FF  2E  32  B0  36  FF  2E  24  6A  27  75  00  3D  83  0C  7E  --  074500
ED  6E  9A  32  96  36  FF  2E  32  98  36  FF  2E  32  AE  36  --  074510
5F  C9  00  01  05  C7  32  8E  3E  C5  2E  0A  C4  83  00  5C  --  074520
00  00  05  C7  32  76  3E  C5  2E  EC  8B  55  57  56  CB  5E  --  074530
00  3C  F5  A4  00  3C  91  14  00  3C  90  C2  CB  5E  5F  C9  --  074540
00  6C  16  60  00  6C  2F  44  00  3C  AE  5C  00  6C  2F  9E  --  074550
00  6C  2F  70  00  6C  17  CA  00  3C  A6  E6  00  3C  A6  C0  --  074560
00  3C  B3  28  00  6C  22  E8  00  3C  A6  B4  00  6C  17  62  --  074570
40  00  00  00  00  00  00  00  3F  F0  00  00  00  00  00  00  --  074580
00  3C  A6  E0  00  3C  A6  E2  00  3C  A6  DE  00  3C  A7  02  --  074590
00  6C  16  52  00  3C  A7  04  00  6C  16  4E  00  3C  A6  E4  --  0745A0
```

515

```
00 6C 2F 9A 00 3C A6 BC 00 6C 2F 9C 00 6C 16 5C -- 0745B0
00 3C 93 CA 00 3C 86 A2 00 6C 23 2E 00 6C 23 2C -- 0745C0
00 3C 96 72 00 3C 96 60 00 3C 96 5E 00 6C 23 40 -- 0745D0
00 6C 22 E6 00 3C AE 54 00 3C 90 71 00 6C 27 C4 -- 0745E0
00 3C AE DC 00 3C AE DA 00 3C AE C6 00 6C 17 DA -- 0745F0
A6 B8 00 3C A6 FE 00 3C AE D8 00 3C AE D6 01 FE -- 074600
A6 F0 00 3C A6 EC 00 3C A6 E8 00 3C A6 C6 00 3C -- 074610
22 F4 00 3C 91 26 00 3C A6 C2 00 3C A6 F4 00 3C -- 074620
93 DE 00 3C 93 E0 00 6C 22 F6 00 6C 16 82 00 6C -- 074630
A6 CE 00 3C A6 B2 00 3C 93 DA 00 3C 93 DC 00 3C -- 074640
00 3C B3 1C 00 06 00 6C 16 4C 00 3C 98 DC 00 3C -- 074650
00 00 F4 46 C7 00 00 F6 46 C7 00 00 0E C8 57 56 -- 074660
10 46 89 0C 10 46 6B 00 00 05 C7 4A D4 3E C5 2E -- 074670
00 F8 46 C7 00 00 FA 46 C7 F2 46 89 0C 12 46 6B -- 074680
03 2E E7 D1 FA 7E 8B 1F 7D 0E 46 3B FA 46 8B 00 -- 074690
FA 46 FF 05 89 F8 46 8B 4A D6 1E 8E 2E 4A D4 3E -- 0746A0
46 89 0C 56 8B 0A 46 8B D9 EB F8 46 01 F2 46 8B -- 0746B0
7D 10 46 3B FA 46 8B 00 00 FA 46 C7 FE 56 89 FC -- 0746C0
FF FC 76 FF FE 76 FF 57 56 31 75 00 F4 7E 83 37 -- 0746D0
7E 8B 5E 5F 00 5C C1 1A 9A 50 F4 46 8D 16 F6 76 -- 0746E0
FF 05 89 4A DA 1E 8E 2E 4A D8 3E 03 2E E7 D1 FA -- 0746F0
00 6A 13 74 00 F4 7E 83 C1 EB 01 FE 46 83 FA 46 -- 074700
C4 83 00 64 28 52 9A F4 76 FF 00 6A 00 6A 00 6A -- 074710
46 6B 1A 7D 0E 46 3B FA 46 8B 00 00 FA 46 C7 0A -- 074720
45 C7 4A DE 1E 8E 2E 4A DC 3E 03 2E F8 8B 76 FA -- 074730

04 C8 57 56 CB 5E 5F C9 DE EB FA 46 FF 00 00 02 -- 074740
46 C7 0A 46 89 0C 0A 46 6B 00 00 FC 46 C7 00 00 -- 074750
75 00 FC 7E 83 2A 7D 0A 46 3B FE 46 8B 00 00 FE -- 074760
1E 8E 2E 4A D8 3E 03 2E E7 D1 FE 7E 8B 57 56 24 -- 074770
5E 5F 00 5C C0 FA 9A 50 FC 46 8D 16 35 FF 4A DA -- 074780
6A 00 6A 00 6A 13 74 00 FC 7E 83 CE EB FE 46 FF -- 074790
5F C9 0A C4 83 00 64 28 52 9A FC 76 FF 00 6A 00 -- 0747A0
03 2E F8 8B 76 0A 46 6B 00 00 0E C8 57 56 CB 5E -- 0747B0
FF 10 6A 05 89 0C 46 8B 4A DE 1E 8E 2E 4A DC 3E -- 0747C0
8B 2E 4A DC 06 03 2E 76 0A 46 6B 0E 76 FF 10 76 -- 0747D0
6E 9A 50 00 06 05 C3 8B 51 CA 8B D8 8B 4A DE 16 -- 0747E0
46 6B 12 76 FF 14 76 FF 10 6A 0A C4 83 00 5C ED -- 0747F0
D8 8B 4A DE 16 8B 2E 4A DC 06 03 2E 76 0A 01 FE -- 074800
C4 83 00 5C ED 6E 9A 50 00 16 05 C3 8B 51 CA 8B -- 074810
DE 1E 8E 2E 4A DC 3E 03 2E F8 8B 76 0A 46 6B 0A -- 074820
03 2E F8 8B 76 0A 46 6B 32 75 00 13 3D 05 8B 4A -- 074830
5D D9 9B 12 7D D8 9B 4A E0 06 DF 2E 9B 4A DC 3E -- 074840
06 DF 2E 9B 4A DC 3E 03 2E F8 8B 76 0A 46 6B 12 -- 074850
2E E7 D1 0A 7E 8B 0E 5D D9 9B 0E 7D D8 9B 4A E0 -- 074860
8B 76 0A 56 6B 05 8B 4A D6 1E 8E 2E 4A D4 3E 03 -- 074870
46 6B 26 45 89 4A DE 1E 8E 2E 4A DC 3E 03 2E FA -- 074880
D9 9B 00 00 28 45 C7 4A DC 3E 03 2E F8 8B 76 0A -- 074890
4A DC 36 03 2E F0 8B 76 0A 46 6B F2 5E DD 9B E8 -- 0748A0
4A DC 3E 03 2E F8 8B 76 0A 46 6B 4A DE 06 8E 2E -- 0748B0
ED 99 9A F2 46 DC 9B 0E 64 D8 26 9B 12 45 D9 9B -- 0748C0
FA 8B 76 0A 56 6B 08 C4 83 00 5C ED F9 9A 00 5C -- 0748D0
E8 D9 9B 2E 45 89 4A DE 1E 8E 2E 4A DC 3E 03 2E -- 0748E0
2E 4A DC 36 03 2E F0 8B 76 0A 46 6B F2 5E DD 9B -- 0748F0
9B 4A DC 3E 03 2E F8 8B 76 0A 46 6B 4A DE 06 8E -- 074900
5C ED 99 9A F2 46 DC 9B 06 64 D8 26 9B 0A 45 D9 -- 074910
2E FA 8B 76 0A 56 6B 08 C4 83 00 5C ED F9 9A 00 -- 074920
00 FC 46 C7 2C 45 89 4A DE 1E 8E 2E 4A DC 3E 03 -- 074930
DC 36 03 2E F0 8B 76 0A 46 6B 00 01 FE 46 C7 00 -- 074940
76 FF FE 76 FF 50 52 99 C7 8B E7 D1 2C 7C 8B 4A -- 074950
```

516

EP 0 533 348 A2

```
6B FE 56 89 FC 46 89 08 C4 83 00 5C EF 6E 9A FC -- 074960
8B 4A DE 1E 8E 2E 4A DC 3E 03 2E F8 8B 76 0A 46 -- 074970
4A DC 36 03 2E F2 8B 76 0A 56 6B 2A 45 89 FC 46 -- 074980
4A DC 3E 03 2E F8 8B 76 0A 46 6B 4A DE 06 8E 2E -- 074990
03 2E FA 8B 76 0A 56 6B 2A 7C F7 26 99 2E 45 8B -- 0749A0
2E F8 8B 76 0A 46 6B FA 46 89 30 45 89 4A DC 3E -- 0749B0
76 0A 46 6B F0 8B FA 6E F7 2A 45 8B 4A DC 3E 03 -- 0749C0
76 0A 56 6B C6 2B 2E 45 8B 4A DC 3E 03 2E F8 8B -- 0749D0
F8 8B 76 0A 46 6B 32 45 89 4A DC 3E 03 2E FA 8B -- 0749E0
56 CB 5E 5F C9 9B 00 01 04 45 C7 4A DC 3E 03 2E -- 0749F0
76 0A 46 6B 00 00 F4 46 C7 00 00 46 C8 57 01 FE -- 074A00
3D 04 45 8B 4A DE 1E 8E 2E 4A DC 3E 03 2E F8 8B -- 074A10
E9 02 C4 83 00 4C 41 D0 9A 0A 76 FF 0E 75 00 02 -- 074A20
1E 8E 2E 4A DC 3E 03 2E F8 8B 76 0A 46 6B 02 9E -- 074A30
CA 46 89 CE 46 89 00 01 B8 00 01 02 45 C7 4A DE -- 074A40
46 6B CC 46 89 D0 46 89 D8 46 89 D2 46 89 C0 2B -- 074A50
ED 99 9A 06 45 D9 9B 4A DC 3E 03 2E F8 8B 76 0A -- 074A60
0A 46 6B BA 46 89 08 C4 83 00 5C ED F9 9A 00 5C -- 074A70
45 D9 9B 4A DE 1E 8E 2E 4A DC 3E 03 2E F8 8B 76 -- 074A80
46 89 08 C4 83 00 5C ED F9 9A 00 5C ED 99 9A 0E -- 074A90
DE 1E 8E 2E 4A DC 3E 03 2E F8 8B 76 0A 46 6B BE -- 074AA0
83 00 5C ED F9 9A 00 5C ED 99 9A 0A 45 D9 9B 4A -- 074AB0
4A DC 3E 03 2E F8 8B 76 0A 46 6B BC 46 89 08 C4 -- 074AC0
8B C8 56 89 C6 46 89 99 2C 45 8B 4A DE 1E 8E 2E -- 074AD0

05 8B 4A D6 1E 8E 2E 4A D4 3E 03 2E E7 D1 0A 7E -- 074AE0
0A 46 6B 74 75 00 3D 83 4A E2 3E C5 2E EE 46 89 -- 074AF0
45 D9 9B 4A DE 1E 8E 2E 4A DC 3E 03 2E F8 8B 76 -- 074B00
46 89 08 C4 83 00 5C ED F9 9A 00 5C ED 99 9A 12 -- 074B10
4A DA 1E 8E 2E 4A D8 3E 03 2E E7 D1 EE 7E 8B C0 -- 074B20
F2 56 89 F0 46 89 02 C4 83 00 64 5D 04 9A 35 FF -- 074B30
FF 52 50 BA 46 8D 16 00 6A 00 6A 50 F4 46 8D 16 -- 074B40
1E 8E 2E 4A DC 3E 03 2E F8 8B 76 0A 46 6B F0 76 -- 074B50
46 E9 14 C4 83 00 54 5C A2 9A 0E 6A 35 FF 4A DE -- 074B60
DE 1E 8E 2E 4A DC 3E 03 2E F8 8B 76 0A 46 6B 01 -- 074B70
3E 03 2E F8 8B 76 0A 46 6B F8 46 89 30 45 8B 4A -- 074B80
03 2E F8 8B 76 0A 46 6B F6 46 89 32 45 8B 4A DC -- 074B90
FE 46 C7 FC 56 89 FA 46 89 99 2A 45 8B 4A DC 3E -- 074BA0
BE 46 8B 00 AA E9 03 7C F8 46 3B FE 46 8B 00 00 -- 074BB0
C0 46 89 00 DA 83 00 01 2D FC 56 13 FA 46 03 99 -- 074BC0
FF 4A DA 1E 8E 2E 4A D8 3E 03 2E E7 D1 EE 7E 8B -- 074BD0
83 F2 56 89 F0 46 89 02 C4 83 00 64 5D 04 9A 35 -- 074BE0
8D 16 00 6A 00 6A 50 F4 46 8D 16 30 75 00 FE 7E -- 074BF0
2E F8 8B 76 0A 46 6B F0 76 FF 52 50 BA 46 01 FE -- 074C00
5C A2 9A 0E 6A 35 FF 4A DE 1E 8E 2E 4A DC 3E 03 -- 074C10
BA 46 8D 16 50 F4 46 8D 16 1A EB 14 C4 83 00 54 -- 074C20
C4 83 00 54 69 72 9A 0E 6A F0 76 FF F2 76 FF 50 -- 074C30
FF 04 6A 00 6A 00 6A 00 6A 13 74 00 F4 7E 83 0E -- 074C40
BE 46 01 FA 46 8B 0A C4 83 00 64 28 52 9A F4 76 -- 074C50
8B 63 7E 00 F6 7E 83 FF 4B E9 FE 46 FF EE 46 FF -- 074C60
03 2E E7 D1 EE 7E 8B C0 46 89 48 BE 46 03 F6 46 -- 074C70
83 00 64 5D 04 9A 35 FF 4A DA 1E 8E 2E 4A D8 3E -- 074C80
A1 E9 03 75 00 FE 7E 83 F2 56 89 F0 46 89 02 C4 -- 074C90
6A F0 76 FF 52 50 BA 46 8D 16 50 F4 46 8D 16 FE -- 074CA0
6A 13 74 00 F4 7E 83 0E C4 83 00 54 69 72 9A 0E -- 074CB0
83 00 64 28 52 9A F4 76 FF 04 6A 00 6A 00 6A 00 -- 074CC0
F4 46 C7 00 00 46 C8 57 56 CB 5E 5F C9 9B 0A C4 -- 074CD0
1E 8E 2E 4A DC 3E 03 2E F8 8B 76 0A 46 6B 00 00 -- 074CE0
44 EB 9A 0A 76 FF 0B 75 00 02 3D 04 45 8B 4A DE -- 074CF0
C0 2B CA 46 89 CE 46 89 00 01 B8 02 FB E9 00 4C -- 074D00
```

517

```
76 0A 46 6B CC 46 89 D0 46 89 D8 46 89 D2 46 89 -- 074D10
99 2C 45 8B 4A DE 1E 8E 2E 4A DC 3E 03 2E F8 8B -- 074D20
DC 3E 03 2E F8 8B 76 0A 46 6B C8 56 89 C6 46 89 -- 074D30
83 00 5C ED F9 9A 00 5C ED 99 9A 06 45 D9 9B 4A -- 074D40
4A DC 3E 03 2E F8 8B 76 0A 46 6B BA 46 89 08 C4 -- 074D50
F9 9A 00 5C ED 99 9A 0E 45 D9 9B 4A DE 1E 8E 2E -- 074D60
2E F8 8B 76 0A 46 6B BE 46 89 08 C4 83 00 5C ED -- 074D70
ED 99 9A 0A 45 D9 9B 4A DE 1E 8E 2E 4A DC 3E 03 -- 074D80
0A 46 6B BC 46 89 08 C4 83 00 5C ED F9 9A 00 5C -- 074D90
26 45 8B 4A DE 1E 8E 2E 4A DC 3E 03 2E F8 8B 76 -- 074DA0
0A 46 6B 74 75 00 3D 83 4A E2 3E C5 2E F2 46 89 -- 074DB0
45 D9 9B 4A DE 1E 8E 2E 4A DC 3E 03 2E F8 8B 76 -- 074DC0
46 89 08 C4 83 00 5C ED F9 9A 00 5C ED 99 9A 12 -- 074DD0
4A DA 1E 8E 2E 4A D8 3E 03 2E E7 D1 F2 7E 8B C0 -- 074DE0
F0 56 89 EE 46 89 02 C4 83 00 64 5D 04 9A 35 FF -- 074DF0
50 BA 46 8D 16 00 6A 00 6A 50 F4 46 8D 16 01 FE -- 074E00
2E 4A DC 3E 03 2E F8 8B 76 0A 46 6B EE 76 FF 52 -- 074E10
14 C4 83 00 54 5C A2 9A 0D 6A 35 FF 4A DE 1E 8E -- 074E20
8E 2E 4A DC 3E 03 2E F8 8B 76 0A 46 6B 01 46 E9 -- 074E30
0A 46 6B FC 56 89 FA 46 89 99 2A 45 8B 4A DE 1E -- 074E40
46 6B F8 46 89 30 45 8B 4A DC 3E 03 2E F8 8B 76 -- 074E50
C7 F6 46 89 32 45 8B 4A DC 3E 03 2E F8 8B 76 0A -- 074E60
8B 00 AA E9 03 7C F8 46 3B FE 46 8B 00 00 FE 46 -- 074E70

89 00 DA 83 00 01 2D FC 56 13 FA 46 03 99 BE 46 -- 074E80
DA 1E 8E 2E 4A D8 3E 03 2E E7 D1 F2 7E 8B C0 46 -- 074E90
56 89 EE 46 89 02 C4 83 00 64 5D 04 9A 35 FF 4A -- 074EA0
00 6A 00 6A 50 F4 46 8D 16 30 75 00 FE 7E 83 F0 -- 074EB0
2E F8 8B 76 0A 46 6B EE 76 FF 52 50 BA 46 8D 16 -- 074EC0
5C A2 9A 0D 6A 35 FF 4A DE 1E 8E 2E 4A DC 3E 03 -- 074ED0
BA 46 8D 16 50 F4 46 8D 16 1A EB 14 C4 83 00 54 -- 074EE0
C4 83 00 54 69 72 9A 0E 6A EE 76 FF F0 76 FF 50 -- 074EF0
FF 04 6A 00 6A 00 6A 00 6A 13 74 00 F4 7E 83 0E -- 074F00
BE 46 01 FA 46 8B 0A C4 83 00 64 28 52 9A F4 76 -- 074F10
8B 63 7E 00 F6 7E 83 FF 4B E9 FE 46 FF F2 46 FF -- 074F20
03 2E E7 D1 F2 7E 8B C0 46 89 48 BE 46 03 F6 46 -- 074F30
83 00 64 5D 04 9A 35 FF 4A DA 1E 8E 2E 4A D8 3E -- 074F40
A1 E9 03 75 00 FE 7E 83 F0 56 89 EE 46 89 02 C4 -- 074F50
6A EE 76 FF 52 50 BA 46 8D 16 50 F4 46 8D 16 FE -- 074F60
6A 13 74 00 F4 7E 83 0E C4 83 00 54 69 72 9A 0E -- 074F70
83 00 64 28 52 9A F4 76 FF 04 6A 00 6A 00 6A 00 -- 074F80
C5 2E 67 75 00 0A 7E 83 6D 75 02 0C 7E 83 0A C4 -- 074F90
6A 00 01 05 C7 0E 7E C5 5D 74 00 3D 83 4A E6 3E -- 074FA0
2E 50 00 06 05 4A DC 06 8B 2E 4A DE 36 FF 2E 10 -- 074FB0
ED 6E 9A 50 00 7C 05 4A DC 06 8B 2E 4A DE 36 FF -- 074FC0
DC 06 8B 2E 4A DE 36 FF 2E 10 6A 0A C4 83 00 5C -- 074FD0
05 4A DC 06 8B 2E 4A DE 36 FF 2E 50 00 16 05 4A -- 074FE0
41 D0 9A 01 6A 0A C4 83 00 5C ED 6E 9A 50 00 8C -- 074FF0
78 C8 57 56 CB 5E 5F C9 9B 02 C4 83 00 4C 01 FE -- 075000
3E 03 2E F8 8B 76 0E 46 6B 00 00 F0 46 C7 00 00 -- 075010
FF 14 75 00 02 3D 04 45 8B 4A DE 1E 8E 2E 4A DC -- 075020
06 C4 83 00 4C 46 52 9A 0A 76 FF 0C 76 FF 0E 76 -- 075030
46 89 C0 2B A4 46 89 A8 46 89 00 01 B8 04 DA E9 -- 075040
05 D9 9B 0A 7E C5 A6 46 89 AA 46 89 B2 46 89 AC -- 075050
04 45 D9 9B E6 5E D9 9B 08 45 D9 9B E2 5E D9 9B -- 075060
76 0E 46 6B DE 5E D9 9B 0C 45 D9 9B DA 5E D9 9B -- 075070
06 45 D9 9B 4A DE 1E 8E 2E 4A DC 3E 03 2E F8 8B -- 075080
B4 46 89 08 C4 83 00 5C ED F9 9A 00 5C ED 99 9A -- 075090
4A DE 1E 8E 2E 4A DC 3E 03 2E F8 8B 76 0E 46 6B -- 0750A0
C4 83 00 5C ED F9 9A 00 5C ED 99 9A 0A 45 D9 9B -- 0750B0
```

```
ED F9 9A 00 5C ED 99 9A E2 46 D9 9B B6 46 89 08 -- 0750C0
5C ED 99 9A E6 46 D9 9B 94 46 89 08 C4 83 00 5C -- 0750D0
DA 46 D9 9B 98 46 89 08 C4 83 00 5C ED F9 9A 00 -- 0750E0
96 46 89 08 C4 83 00 5C ED F9 9A 00 5C ED 99 9A -- 0750F0
4A DE 1E 8E 2E 4A DC 3E 03 2E F8 8B 76 0E 46 6B -- 075100
F8 8B 76 0E 46 6B A2 56 89 A0 46 89 99 2C 45 8B -- 075110
4A E2 3E C5 2E EE 46 89 26 45 8B 4A DC 3E 03 2E -- 075120
5C ED 99 9A DE 46 D9 9B 01 19 E9 03 74 00 3D 83 -- 075130
06 DF 2E 9B 9A 46 89 08 C4 83 00 5C ED F9 9A 00 -- 075140
DC 36 03 2E F0 8B 76 0E 46 6B 88 5E DD 9B 4A E0 -- 075150
DC 3E 03 2E F8 8B 76 0E 46 6B 4A DE 06 8E 2E 4A -- 075160
26 9B 0E 65 D8 9B E6 46 D9 9B 4A DE 1E 8E 2E 4A -- 075170
5C EE 2F 9A 00 5C ED 99 9A 88 4E DC 9B 2C 4C DE -- 075180
4A E0 06 DF 2E 9B 92 56 89 90 46 89 08 C4 83 00 -- 075190
2E 4A DC 3E 03 2E F8 8B 76 0E 46 6B 88 5E DD 9B -- 0751A0
88 4E DC 9B 06 65 D8 9B E2 46 D9 9B 4A DE 1E 8E -- 0751B0
90 46 01 08 C4 83 00 5C EE 2F 9A 00 5C ED 99 9A -- 0751C0
EF 6E 9A 90 76 FF 92 76 FF 00 6A 01 6A 92 56 11 -- 0751D0
D1 00 10 B9 99 EE 46 01 F4 46 89 08 C4 83 00 5C -- 0751E0
E7 D1 EE 7E 8B 92 56 19 90 46 29 FA E2 D2 D1 E0 -- 0751F0
04 9A 35 FF 4A DA 1E 8E 2E 4A D8 3E 03 2E 01 FE -- 075200
01 90 46 8B EC 56 89 EA 46 89 02 C4 83 00 64 5D -- 075210

50 94 46 8D 16 00 6A 00 6A 50 F0 46 8D 16 EA 46 -- 075220
2E 4A DC 3E 03 2E F8 8B 76 0E 46 6B EA 76 FF 52 -- 075230
14 C4 83 00 54 5C A2 9A 0F 6A 35 FF 4A DE 1E 8E -- 075240
8E 2E 4A DC 3E 03 2E F8 8B 76 0E 46 6B 02 B3 E9 -- 075250
0E 46 6B FC 56 89 FA 46 89 99 2A 45 8B 4A DE 1E -- 075260
46 6B F2 46 89 32 45 8B 4A DC 3E 03 2E F8 8B 76 -- 075270
65 D8 9B E6 46 D9 9B 4A DC 3E 03 2E F8 8B 76 0E -- 075280
46 89 08 C4 83 00 5C ED F9 9A 00 5C ED 99 9A 0E -- 075290
5C EF 74 9A 50 52 99 D8 46 8B 50 FA 46 8D 16 D8 -- 0752A0
F8 8B 76 0E 46 6B EE 46 01 D6 46 89 08 C4 83 00 -- 0752B0
99 9A 06 45 D9 9B 4A DE 1E 8E 2E 4A DC 3E 03 2E -- 0752C0
8B CA 8B D8 8B 08 C4 83 00 5C EE 2F 9A 00 5C ED -- 0752D0
FA E2 D2 D1 E0 D1 00 01 B9 D1 1B C3 2B 99 94 46 -- 0752E0
52 99 D6 46 8B 50 FA 46 8D 16 D4 56 89 D2 46 89 -- 0752F0
76 0E 46 6B D8 46 29 08 C4 83 00 5C EE E2 9A 50 -- 075300
99 2C 45 8B 4A DE 1E 8E 2E 4A DC 3E 03 2E F8 8B -- 075310
52 99 D8 46 8B 50 52 FA E2 D2 D1 E0 D1 00 01 B9 -- 075320
8B D0 56 89 CE 46 89 08 C4 83 00 5C EE DC 9A 50 -- 075330
1B C3 2B FC 56 8B FA 46 8B CA 8B D8 8B 99 D8 46 -- 075340
00 D8 7E 83 00 00 F4 46 C7 F8 56 89 F6 46 89 D1 -- 075350
DE 46 D9 9B 88 5E DD 9B E8 D9 9B F4 46 FF 03 7E -- 075360
ED F9 9A 00 5C ED 99 9A 88 46 DC 9B E6 66 D8 9B -- 075370
89 F8 56 1B F6 46 2B 99 CC 46 89 08 C4 83 00 5C -- 075380
EF 74 9A 50 52 99 C8 46 8B 50 FA 46 8D 16 C8 46 -- 075390
50 FA 46 8D 16 F4 46 01 CA 46 89 08 C4 83 00 5C -- 0753A0
D8 8B 08 C4 83 00 5C EE E2 9A 50 52 99 CA 46 8B -- 0753B0
FE 46 C7 F2 46 89 D1 1B C3 2B 99 C8 46 8B CA 8B -- 0753C0
EE 7E 8B 00 CE E9 03 7C F4 46 3B FE 46 8B 00 00 -- 0753D0
04 9A 35 FF 4A DA 1E 8E 2E 4A D8 3E 03 2E E7 D1 -- 0753E0
01 D2 46 8B EC 56 89 EA 46 89 02 C4 83 00 64 5D -- 0753F0
46 03 99 98 46 8B 4E 75 00 FE 7E 83 EA 46 01 FE -- 075400
CE 46 8B 9A 46 89 00 DA 83 00 01 2D F8 56 13 F6 -- 075410
94 46 8D 16 00 6A 00 6A 50 F0 46 8D 16 EA 46 01 -- 075420
3E 03 2E F8 8B 76 0E 46 6B EA 76 FF EC 76 FF 50 -- 075430
00 54 5C A2 9A 0F 6A 35 FF 4A DE 1E 8E 2E 4A DC -- 075440
13 FA 46 03 99 98 46 8B 30 EB F6 46 8B 14 C4 83 -- 075450
50 F0 46 8D 16 9A 46 89 00 DA 83 00 01 2D FC 56 -- 075460
```

EP 0 533 348 A2

```
69 72 9A 10 6A EA 76 FF EC 76 FF 50 94 46 8D 16 -- 075470
74 00 F0 7E 83 98 46 01 FA 46 8B 0E C4 83 00 54 -- 075480
64 28 52 9A F0 76 FF 04 6A 00 6A 00 6A 00 6A 13 -- 075490
F2 7E 83 FF 27 E9 FE 46 FF EE 46 FF 0A C4 83 00 -- 0754A0
EE 7E 8B 9A 46 89 48 98 46 03 F2 46 8B 6E 7E 00 -- 0754B0
04 9A 35 FF 4A DA 1E 8E 2E 4A D8 3E 03 2E E7 D1 -- 0754C0
01 D2 46 8B EC 56 89 EA 46 89 02 C4 83 00 64 5D -- 0754D0
8D 16 FD 33 E9 CE 46 8B 06 75 00 FE 7E 83 EA 46 -- 0754E0
10 6A EA 76 FF EC 76 FF 50 94 46 8D 16 50 F0 46 -- 0754F0
00 6A 13 74 00 F0 7E 83 0E C4 83 00 54 69 72 9A -- 075500
C4 83 00 64 28 52 9A F0 76 FF 04 6A 00 6A 00 6A -- 075510
00 FE 46 C7 00 00 44 C8 57 56 CB 5E 5F C9 9B 0A -- 075520
46 89 00 01 B8 00 00 FA 46 C7 00 00 FC 46 C7 00 -- 075530
89 DA 46 89 E2 46 89 DC 46 89 C0 2B D4 46 89 D8 -- 075540
1E 8E 2E 4A DC 3E 03 2E F8 8B 76 0A 46 6B D6 46 -- 075550
3E 03 2E F8 8B 76 0A 46 6B 00 01 02 45 C7 4A DE -- 075560
3E 03 2E F8 8B 76 0A 46 6B 00 00 34 45 C7 4A DC -- 075570
00 5C ED F9 9A 00 5C ED 99 9A 06 45 D9 9B 4A DC -- 075580
DC 3E 03 2E F8 8B 76 0A 46 6B C4 46 89 08 C4 83 -- 075590
9A 00 5C ED 99 9A 0E 45 D9 9B 4A DE 1E 8E 2E 4A -- 0755A0
F8 8B 76 0A 46 6B C8 46 89 08 C4 83 00 5C ED F9 -- 0755B0

99 9A 0A 45 D9 9B 4A DE 1E 8E 2E 4A DC 3E 03 2E -- 0755C0
D9 9B C6 46 89 08 C4 83 00 5C ED F9 9A 00 5C ED -- 0755D0
4A DC 36 03 2E F0 8B 76 0A 46 6B BC 5E DD 9B E8 -- 0755E0
4A DC 3E 03 2E F8 8B 76 0A 46 6B 4A DE 06 8E 2E -- 0755F0
0E 64 D8 26 9B 12 45 D9 9B 4A DE 1E 8E 2E 01 FE -- 075600
C4 83 00 5C ED F9 9A 00 5C ED 99 9A BC 46 DC 9B -- 075610
2E E7 D1 FA 7E 8B F0 8B 76 0A 46 6B F8 46 89 08 -- 075620
46 03 FC 46 8B FE 03 4A DE 1E 8E 2E 4A DC 3E 03 -- 075630
3E 03 2E F8 8B 76 0A 46 6B 36 45 89 C8 46 89 C8 -- 075640
E7 D1 FA 7E 8B F0 8B 76 0A 46 6B 34 45 FF 4A DC -- 075650
6B 5D 7E 6E 45 3B F8 46 8B FE 03 4A DC 3E 03 2E -- 075660
2E 4A DC 1E 03 2E E3 D1 FA 5E 8B F0 8B 76 0A 46 -- 075670
D1 FA 7E 8B F0 8B 76 0A 46 6B DE 03 4A DE 06 8E -- 075680
48 6E 47 03 26 46 45 8B FE 03 4A DC 3E 03 2E E7 -- 075690
4A DC 3E 03 2E E7 D1 FA 7E 8B F2 8B 76 0A 56 6B -- 0756A0
E7 D1 FA 7E 8B F0 8B 76 0A 46 6B 4E 45 89 FE 03 -- 0756B0
76 0A 46 6B 3C EB 6E 45 8B FE 03 4A DC 3E 03 2E -- 0756C0
DE 1E 8E 2E 4A DC 3E 03 2E E7 D1 FA 7E 8B F0 8B -- 0756D0
03 2E E6 D1 FA 76 8B C8 8B 76 0A 46 6B FE 03 4A -- 0756E0
44 03 26 F8 46 8B F1 03 4A DE 06 8E 2E 4A DC 36 -- 0756F0
89 48 C8 46 03 FC 46 89 F8 46 8B 4E 45 89 48 46 -- 075700
3E 03 2E E7 D1 FA 7E 8B F0 8B 76 0A 46 6B CA 46 -- 075710
6B E8 46 89 3E 45 8B FE 03 4A DE 1E 8E 2E 4A DC -- 075720
03 4A DC 3E 03 2E E7 D1 FA 7E 8B F0 8B 76 0A 46 -- 075730
FA 76 8B C8 8B 76 0A 46 6B EC 46 89 46 45 8B FE -- 075740
46 6B F1 03 4A DE 06 8E 2E 4A DC 36 03 2E E6 D1 -- 075750
DE 26 9B 06 45 D9 9B 4A DC 3E 03 2E F8 8B 76 0A -- 075760
6B 08 C4 83 00 5C ED F9 9A 00 5C ED 99 9A 66 44 -- 075770
2E 4A DC 3E 03 2E E7 D1 FA 7E 8B F2 8B 76 0A 56 -- 075780
76 0A 46 6B EA 46 89 56 45 89 FE 03 4A DE 1E 8E -- 075790
DE 06 8E 2E 4A DC 36 03 2E E6 D1 FA 76 8B C8 8B -- 0757A0
D9 9B 4A DC 3E 03 2E F8 8B 76 0A 46 6B F1 03 4A -- 0757B0
5C ED F9 9A 00 5C ED 99 9A 66 44 DE 26 9B 0A 45 -- 0757C0
2E E7 D1 FA 7E 8B F2 8B 76 0A 56 6B 08 C4 83 00 -- 0757D0
8D 16 5E 45 89 FE 03 4A DE 1E 8E 2E 4A DC 3E 03 -- 0757E0
00 6A 00 6A 50 C4 46 8D 16 00 6A 00 6A 50 FE 46 -- 0757F0
6A 35 FF 4A DC 3E 03 2E F8 8B 76 0A 46 6B 01 FE -- 075800
6A 13 74 00 FE 7E 83 14 C4 83 00 54 5C A2 9A 01 -- 075810
```

520

```
83 00 64 28 52 9A FE 76 FF 04 6A 00 6A 00 6A 00 -- 075820
FD E6 E9 03 7E F8 46 29 FC 46 8B FA 46 FF 0A C4 -- 075830
00 00 FE 46 C7 00 00 38 C8 57 56 CB 5E 5F C9 9B -- 075840
46 89 E0 46 89 C0 2B D8 46 89 DC 46 89 00 01 B8 -- 075850
3E 03 2E F8 8B 76 0A 46 6B DA 46 89 DE 46 89 E6 -- 075860
00 5C ED 99 9A 06 45 D9 9B 4A DE 1E 8E 2E 4A DC -- 075870
8B 76 0A 46 6B EE 46 89 08 C4 83 00 5C ED F9 9A -- 075880
9A 0A 45 D9 9B 4A DE 1E 8E 2E 4A DC 3E 03 2E F8 -- 075890
C7 F2 46 89 08 C4 83 00 5C ED F9 9A 00 5C ED 99 -- 0758A0
2E 4A DC 3E 03 2E F8 8B 76 0A 46 6B 00 00 FC 46 -- 0758B0
6B 00 D8 E9 03 7C 34 45 3B FC 46 8B 4A DE 1E 8E -- 0758C0
03 4A DC 3E 03 2E E7 D1 FC 7E 8B F0 8B 76 0A 46 -- 0758D0
FC 7E 8B F0 8B 76 0A 46 6B CC 46 89 46 45 8B FE -- 0758E0
6B CE 46 89 4E 45 8B FE 03 4A DC 3E 03 2E E7 D1 -- 0758F0
03 4A DC 3E 03 2E E7 D1 FC 7E 8B F0 8B 76 0A 46 -- 075900
FC 7E 8B F0 8B 76 0A 46 6B C8 46 89 56 45 8B FE -- 075910
6B CA 46 89 5E 45 8B FE 03 4A DC 3E 03 2E E7 D1 -- 075920
6B EC 46 89 05 8B 4A DC 3E 03 2E F8 8B 76 0A 46 -- 075930
03 4A DC 3E 03 2E E7 D1 FC 7E 8B F0 8B 76 0A 46 -- 075940
00 6A 00 6A 50 FE 46 8D 16 F0 46 89 36 45 8B FE -- 075950

8B F0 8B 76 0A 46 6B 00 6A 00 6A 50 C8 46 8D 16 -- 075960
01 6A 3E 75 FF FE 03 4A DC 3E 03 2E E7 D1 FC 7E -- 075970
00 6A 13 74 00 FE 7E 83 14 C4 83 00 54 5C A2 9A -- 075980
C4 83 00 64 28 52 9A FE 76 FF 04 6A 00 6A 00 6A -- 075990
56 C8 57 56 CB 5E 5F C9 9B FF 0D E9 FC 46 FF 0A -- 0759A0
D2 46 89 D6 46 89 00 01 B8 00 00 F6 46 C7 00 00 -- 0759B0
7E C5 D4 46 89 D8 46 89 E0 46 89 DA 46 89 C0 2B -- 0759C0
BE 5E D9 9B 08 45 D9 9B BA 5E D9 9B 05 D9 9B 0A -- 0759D0
B6 5E D9 9B 0C 45 D9 9B B2 5E D9 9B 04 45 D9 9B -- 0759E0
4A DE 1E 8E 2E 4A DC 3E 03 2E F8 8B 76 0E 46 6B -- 0759F0
00 5C ED F9 9A 00 5C ED 99 9A 06 45 D9 9B 01 FE -- 075A00
DC 3E 03 2E F8 8B 76 0E 46 6B E2 46 89 08 C4 83 -- 075A10
9A 00 5C ED 99 9A 0A 45 D9 9B 4A DE 1E 8E 2E 4A -- 075A20
F8 8B 76 0E 46 6B E4 46 89 08 C4 83 00 5C ED F9 -- 075A30
9B E6 46 89 05 8B 4A DE 1E 8E 2E 4A DC 3E 03 2E -- 075A40
08 C4 83 00 5C ED F9 9A 00 5C ED 99 9A BA 46 D9 -- 075A50
5C ED F9 9A 00 5C ED 99 9A B2 46 D9 9B E8 46 89 -- 075A60
3E 03 2E F8 8B 76 0E 46 6B EC 46 89 08 C4 83 00 -- 075A70
FE 46 C7 FC 46 89 34 45 8B 4A DE 1E 8E 2E 4A DC -- 075A80
76 00 5C ED 94 9A B6 5E D8 9B BE 46 D9 9B 00 00 -- 075A90
6B 26 7D FC 46 3B FE 46 8B FE 46 FF 01 F0 E9 03 -- 075AA0
2E 4A DC 3E 03 2E E7 D1 FE 7E 8B F0 8B 76 0E 46 -- 075AB0
94 9A 36 5D DE 9B BE 46 D9 9B FE 03 4A DE 1E 8E -- 075AC0
7E 8B F0 8B 76 0E 46 6B FE 4E FF CF 73 00 5C ED -- 075AD0
9B FE 03 4A DE 1E 8E 2E 4A DC 3E 03 2E E7 D1 FE -- 075AE0
5C ED F9 9A 00 5C ED 99 9A 36 65 DE 9B BE 46 D9 -- 075AF0
FE 7E 8B F0 8B 76 0E 46 6B FA 46 89 08 C4 83 00 -- 075B00
46 8B FE 03 4A DE 1E 8E 2E 4A DC 3E 03 2E E7 D1 -- 075B10
00 5C ED 99 9A BE 46 D9 9B C6 46 89 46 45 03 FA -- 075B20
8B 76 0E 46 6B EA 46 89 08 C4 83 00 5C ED F9 9A -- 075B30
4A DE 1E 8E 2E 4A DC 36 03 2E E6 D1 FE 76 8B C8 -- 075B40
BE 66 D8 9B B6 46 D9 9B C6 7E 2B 4E 7C 8B F1 03 -- 075B50
F8 46 89 08 C4 83 00 5C ED F9 9A 00 5C ED 99 9A -- 075B60
2E E7 D1 FE 7E 8B F0 8B 76 0E 46 6B 25 7E C7 3B -- 075B70
46 89 4E 45 8B FE 03 4A DE 1E 8E 2E 4A DC 3E 03 -- 075B80
89 C6 46 03 F8 46 8B 09 EB F8 46 89 C6 46 2B C8 -- 075B90
00 5C ED F9 9A 00 5C ED 99 9A BA 46 D9 9B C8 46 -- 075BA0
9A 00 5C ED 99 9A B2 46 D9 9B C2 46 89 08 C4 83 -- 075BB0
F0 8B 76 0E 46 6B C4 46 89 08 C4 83 00 5C ED F9 -- 075BC0
```

```
03  4A  DE  1E  8E  2E  4A  DC  3E  03  2E  E7  D1  FE  7E  8B  --  075BD0
9B  4A  EA  06  DF  2E  9B  44  7E  03  FF  3D  56  45  8B  FE  --  075BE0
00  5C  ED  99  9A  AA  46  DC  9B  BA  46  D9  9B  AA  5E  DD  --  075BF0
DF  2E  9B  C2  46  89  08  C4  83  00  5C  ED  F9  9A  01  FE  --  075C00
9A  AA  46  DC  9B  B2  46  D9  9B  AA  5E  DD  9B  4A  EA  06  --  075C10
16  C4  46  89  08  C4  83  00  5C  ED  F9  9A  00  5C  ED  99  --  075C20
6A  00  6A  50  C2  46  8D  16  00  6A  00  6A  50  F6  46  8D  --  075C30
DC  3E  03  2E  E7  D1  FE  7E  8B  F0  8B  76  0E  46  6B  00  --  075C40
5C  A2  9A  02  6A  3E  75  FF  FE  03  4A  DE  1E  8E  2E  4A  --  075C50
6A  00  6A  00  6A  13  74  00  F6  7E  83  14  C4  83  00  54  --  075C60
46  8B  0A  C4  83  00  64  28  52  9A  F6  76  FF  04  6A  00  --  075C70
9B  BE  46  D8  9B  02  C4  83  00  5C  ED  A7  9A  50  40  F8  --  075C80
EC  8B  55  57  56  CB  5E  5F  C9  9B  FD  FE  E9  BE  5E  D9  --  075C90
6A  27  EB  15  74  00  02  3D  07  74  00  01  3D  0A  46  8B  --  075CA0
00  4C  41  D0  9A  01  6A  02  C4  83  00  4C  41  D0  9A  00  --  075CB0
EB  9A  01  6A  02  C4  83  00  4C  44  EB  9A  00  6A  11  EB  --  075CC0
00  00  08  C8  57  56  CB  5E  5F  C9  02  C4  83  00  4C  44  --  075CD0
06  8B  2E  4A  DE  36  FF  2E  0A  76  FF  0C  76  FF  10  6A  --  075CE0
10  6A  0A  C4  83  00  5C  ED  6E  9A  50  00  06  05  4A  DC  --  075CF0

4A  DC  06  8B  2E  4A  DE  36  FF  2E  0E  76  FF  10  76  FF  --  075D00
DC  3E  C5  2E  0A  C4  83  00  5C  ED  6E  9A  50  00  16  05  --  075D10
C7  00  01  34  45  C7  00  16  05  C7  00  02  04  45  C7  4A  --  075D20
45  C7  01  00  6E  45  C7  03  00  46  45  C7  00  16  3E  45  --  075D30
70  45  C7  03  00  48  45  C7  00  05  40  45  C7  00  00  66  --  075D40
80  4A  45  C7  00  13  42  45  C7  00  00  68  45  C7  01  00  --  075D50
00  13  44  45  C7  00  00  6A  45  C7  00  80  72  45  C7  01  --  075D60
6A  04  00  6C  45  C7  00  80  74  45  C7  01  80  4C  45  C7  --  075D70
DC  06  8B  2E  4A  DE  36  FF  2E  0A  76  FF  0C  76  FF  10  --  075D80
FF  10  6A  0A  C4  83  00  5C  ED  6E  9A  50  00  7C  05  4A  --  075D90
05  4A  DC  06  8B  2E  4A  DE  36  FF  2E  0E  76  FF  10  76  --  075DA0
4A  DC  3E  C5  2E  0A  C4  83  00  5C  ED  6E  9A  50  00  8C  --  075DB0
00  13  00  B4  85  C7  00  02  7A  45  C7  00  13  76  45  C7  --  075DC0
F8  5E  DD  9B  4A  E0  06  DF  2E  9B  00  01  00  AA  85  C7  --  075DD0
00  5C  ED  99  9A  F8  76  DC  9B  08  45  D9  9B  0A  7E  C5  --  075DE0
BC  85  89  4A  DC  3E  C5  2E  08  C4  83  00  5C  ED  F9  9A  --  075DF0
9B  04  00  00  DC  85  C7  01  80  00  E4  85  C7  00  01  FE  --  075E00
9B  00  88  9D  D9  9B  00  88  BD  D8  9B  4A  E0  06  DF  2E  --  075E10
9B  00  84  9D  D9  9B  00  84  BD  D8  9B  4A  E0  06  DF  2E  --  075E20
00  3C  61  BE  00  3C  66  5A  00  3C  6E  5A  CB  5E  5F  C9  --  075E30
6A  C8  57  56  04  00  00  3C  61  BC  00  6C  29  F2  00  02  --  075E40
9B  0E  7E  C5  00  00  FA  46  C7  FF  FF  FE  46  C7  00  00  --  075E50
5E  D9  9B  05  D9  9B  0A  7E  C5  A6  5E  D9  9B  10  45  D9  --  075E60
80  0A  7E  C5  9E  5E  D9  9B  04  45  D9  9B  0A  7E  C5  A2  --  075E70
A6  66  D8  9B  A2  46  D9  9B  01  B4  E9  03  75  00  1B  7D  --  075E80
96  5E  DD  9B  BE  4E  D8  9B  BE  46  D9  9B  BE  5E  D9  9B  --  075E90
9B  26  4C  D8  26  9B  26  45  D9  9B  0E  7E  C5  0E  76  C4  --  075EA0
D9  9B  96  5E  DD  9B  EE  D9  9B  B6  5E  D9  9B  96  66  DC  --  075EB0
E9  C0  2B  05  73  00  5C  ED  94  9A  96  5E  DC  9B  B6  46  --  075EC0
00  64  4E  FE  9A  00  5C  ED  99  9A  B6  46  D9  9B  03  9F  --  075ED0
D8  9B  14  45  D9  9B  0E  7E  C5  BA  5E  D9  9B  08  C4  83  --  075EE0
5E  D9  9B  0C  45  D9  9B  0A  7E  C5  CA  5E  D9  9B  BA  66  --  075EF0
7C  02  FC  7E  83  FC  46  FF  03  EB  00  00  FC  46  C7  B2  --  075F00
07  EB  BA  46  D9  9B  06  74  00  FC  7E  83  00  E5  E9  03  --  075F10
D9  9B  0E  7E  C5  96  5E  DD  9B  E0  D9  9B  BA  46  D9  9B  --  075F20
D8  9B  CA  46  D9  9B  CA  5E  D9  9B  96  46  DC  9B  14  45  --  075F30
5E  D8  9B  CA  46  D9  9B  0F  72  00  5C  ED  94  9A  9E  5E  --  075F40
B2  5E  D8  9B  CA  46  D9  9B  1E  76  00  5C  ED  94  9A  B2  --  075F50
9A  9E  5E  D8  9B  CA  46  D9  9B  A1  72  00  5C  ED  94  9A  --  075F60
5D  D8  9B  CA  46  D9  9B  0E  7E  C5  92  77  00  5C  ED  94  --  075F70
```

522

```
9B CA 46 D9 9B 0E 7E C5 80 72 00 5C ED 94 9A 2E  -- 075F80
46 8D 16 FF 6B E9 03 76 00 5C ED 94 9A 36 5D D8  -- 075F90
10 76 FF 0A 76 FF 0C 76 FF 50 C6 46 8D 16 50 C2  -- 075FA0
16 34 74 C0 0B 10 C4 83 00 4C 59 54 9A 0E 76 FF  -- 075FB0
8D 16 50 CA 46 8D 16 50 C6 46 8D 16 50 C2 46 8D  -- 075FC0
00 4C 5D FD 9A 02 6A 0E 76 FF 10 76 FF 50 A2 46  -- 075FD0
00 01 B8 FF 1B E9 FA 46 FF 06 74 C0 0B 16 C4 83  -- 075FE0
7E 83 32 EB FA 46 8B 02 78 E9 00 01 B8 02 7E E9  -- 075FF0
62 E9 C0 2B 02 67 E9 00 01 B8 06 75 00 12 01 FE  -- 076000
00 5C ED 94 9A 61 8C 1E DC 2E 9B BA 46 D9 9B 02  -- 076010
E9 C0 2B 02 46 E9 C0 2B 02 4B E9 00 01 B8 06 74  -- 076020
7E C5 EF EB D5 74 00 02 3D C9 74 00 01 3D 02 41  -- 076030
CE 46 D9 9B CE 5E D9 9B E0 D9 9B 1E 45 D9 9B 0A  -- 076040
9B 9E 46 D9 9B 0E 7E C5 96 5E DD 9B A2 4E D8 9B  -- 076050
7E C5 0E 76 C4 D2 5E D9 9B 96 46 DC 9B 14 65 D8  -- 076060
D9 9B F6 5E D9 9B 26 4C D8 26 9B 26 45 D9 9B 0E  -- 076070
46 DC 9B E8 D9 9B 96 5E DD 9B CE 4E D8 9B CE 46  -- 076080
96 5E DD 9B E0 D9 9B CE 46 D9 9B D6 5E D9 9B 96  -- 076090

F2 5E D9 9B A6 66 D8 9B 96 4E DC 9B D2 46 D9 9B  -- 0760A0
A6 46 D9 9B 96 5E DD 9B D2 4E D8 9B D2 46 D9 9B  -- 0760B0
EE 5E D9 9B F6 66 D8 9B 96 46 DC 9B A6 4E D8 9B  -- 0760C0
F2 46 D9 9B 96 5E DD 9B EE 4E D8 9B D6 46 D9 9B  -- 0760D0
EA 46 D9 9B EA 5E D9 9B 96 66 DC 9B F2 4E D8 9B  -- 0760E0
E9 C0 2B 05 73 00 5C ED 94 9A 61 8C 1E DC 2E 9B  -- 0760F0
00 64 4E FE 9A 00 5C ED 99 9A EA 46 D9 9B 01 71  -- 076100
D8 9B E0 D9 9B F2 46 D9 9B EA 5E D9 9B 08 C4 83  -- 076110
D8 9B E2 46 D9 9B E2 5E D9 9B D6 76 D8 9B EA 66  -- 076120
4E DC 9B E0 D9 9B CE 46 D9 9B 96 5E DD 9B A2 66  -- 076130
E0 D9 9B F2 46 D9 9B DA 5E D9 9B 9E 46 D8 9B 96  -- 076140
E6 46 D9 9B E6 5E D9 9B D6 76 D8 9B EA 46 D8 9B  -- 076150
9B E0 D9 9B CE 46 D9 9B 96 5E DD 9B A2 66 D8 9B  -- 076160
5A 16 E2 46 8D DE 5E D9 9B 9E 46 D8 9B 96 4E DC  -- 076170
56 89 AA 46 89 5A 16 DA 46 8D B0 56 89 AE 46 89  -- 076180
83 04 AE 46 83 FC 46 FF 0B EB 00 00 FC 46 C7 AC  -- 076190
FF AC 76 FF 00 8B E9 03 7C 02 FC 7E 83 04 AA 46  -- 0761A0
76 FF 0A 76 FF 0C 76 FF AE 76 FF B0 76 FF AA 76  -- 0761B0
C8 74 C0 0B 10 C4 83 00 4C 5A AC 9A 0E 76 FF 10  -- 0761C0
50 C6 46 8D 16 50 C2 46 8D 16 21 75 FF FE 7E 83  -- 0761D0
4C 59 54 9A 0E 76 FF 10 76 FF 0A 76 FF 0C 76 FF  -- 0761E0
46 8D 16 35 74 00 FE 7E 83 FE 46 89 10 C4 83 00  -- 0761F0
FF AA 76 FF AC 76 FF 50 C6 46 8D 16 50 C2 01 FE  -- 076200
5D FD 9A 02 6A 0E 76 FF 10 76 FF AE 76 FF B0 76  -- 076210
B8 FF 6B E9 FA 46 FF 06 74 C0 0B 16 C4 83 00 4C  -- 076220
7E 83 2B EB FA 46 8B 3C EB 00 01 B8 41 EB 00 01  -- 076230
46 D9 9B 28 EB C0 2B 2C EB 00 01 B8 05 75 00 12  -- 076240
EB 00 01 B8 05 74 00 5C ED 94 9A DE 5E D8 9B DA  -- 076250
02 3D D0 74 00 01 3D 0C EB C0 2B 10 EB C0 2B 14  -- 076260
00 00 60 C8 57 56 CB 5E 5F C9 9B F0 EB DA 74 00  -- 076270
C0 5E D9 9B 26 45 D9 9B 0A 7E C5 FF FF FE 46 C7  -- 076280
D9 9B 0E 7E C5 BC 5E D9 9B 14 45 D9 9B 0E 7E C5  -- 076290
46 D9 9B B0 5E DD 9B EE D9 9B B8 5E D9 9B 26 45  -- 0762A0
0A 76 00 5C ED 94 9A B0 5E DC 9B B8 66 D8 9B C0  -- 0762B0
D8 9B C0 46 D9 9B 0B EB B8 66 D8 9B C0 46 D9 9B  -- 0762C0
00 5C ED 94 9A 61 94 1E DC 2E 9B E0 D9 9B B8 66  -- 0762D0
C5 0E 76 C4 A8 5E DD 9B EE D9 9B 01 E7 E9 03 72  -- 0762E0
9A A8 5E DC 9B 10 64 D8 26 9B 10 45 D9 9B 0A 7E  -- 0762F0
10 45 D9 9B 0A 7E C5 0E 76 C4 11 76 00 5C ED 94  -- 076300
45 D9 9B 0A 7E C5 0E 76 C4 12 EB 10 64 D8 26 9B  -- 076310
9A 61 94 1E DC 2E 9B E0 D9 9B 10 64 D8 26 9B 10  -- 076320
```

```
A0 5E DD 9B EE D9 9B 01 93 E9 03 72 00 5C ED 94 -- 076330
9A A0 5E DC 9B BC 66 D8 9B 14 45 D9 9B 0A 7E C5 -- 076340
66 D8 9B 14 45 D9 9B 0A 7E C5 0D 76 00 5C ED 94 -- 076350
D9 9B BC 66 D8 9B 14 45 D9 9B 0A 7E C5 0E EB BC -- 076360
4B E9 03 72 00 5C ED 94 9A 61 94 1E DC 2E 9B E0 -- 076370
03 74 18 44 3B 26 18 45 8B 0A 7E C5 0E 76 C4 01 -- 076380
D8 26 9B 36 45 D9 9B 0A 7E C5 0E 76 C4 00 FB E9 -- 076390
9B 0A 7E C5 0E 76 C4 19 73 00 5C ED 94 9A 36 5C -- 0763A0
E9 03 76 00 5C ED 94 9A 2E 5C D8 26 9B 36 45 D9 -- 0763B0
5C D8 26 9B 2E 45 D9 9B 0A 7E C5 0E 76 C4 00 84 -- 0763C0
D9 9B 0A 7E C5 0E 76 C4 16 73 00 5C ED 94 9A 36 -- 0763D0
76 C4 58 77 00 5C ED 94 9A 2E 5C D8 26 9B 2E 45 -- 0763E0
ED 94 9A 36 5C D8 26 9B 36 45 D9 9B 0E 7E C5 0A -- 0763F0
36 45 D9 9B 0E 7E C5 0A 76 C4 16 73 00 5C 01 FE -- 076400
C5 0A 76 C4 2C 77 00 5C ED 94 9A 2E 5C D8 26 9B -- 076410
00 5C ED 94 9A 36 5C D8 26 9B 2E 45 D9 9B 0E 7E -- 076420
5C D8 26 9B 2E 45 D9 9B 0E 7E C5 0A 76 C4 1C 73 -- 076430

76 C4 03 5A E9 00 01 B8 06 76 00 5C ED 94 9A 2E -- 076440
ED 94 9A 2E 5C D8 26 9B 36 45 D9 9B 0A 7E C5 0E -- 076450
26 9B 2E 45 D9 9B 0A 7E C5 0E 76 C4 16 74 00 5C -- 076460
06 75 00 12 7E 83 11 75 00 5C ED 94 9A 36 5C D8 -- 076470
03 18 E9 C0 2B 03 1D E9 C0 2B 03 22 E9 00 01 B8 -- 076480
50 C8 46 8D 16 50 C4 46 8D 16 21 75 FF FE 7E 83 -- 076490
4C 59 54 9A 0A 76 FF 0C 76 FF 0E 76 FF 10 76 FF -- 0764A0
12 7E 83 0C 74 00 FE 7E 83 FE 46 89 10 C4 83 00 -- 0764B0
76 C4 02 DA E9 C0 2B 02 DF E9 00 01 B8 06 75 00 -- 0764C0
5E D9 9B 10 64 D8 26 9B 10 45 D9 9B 0A 7E C5 0E -- 0764D0
EC 5E D9 9B BC 66 D8 9B 14 45 D9 9B 0A 7E C5 F0 -- 0764E0
F0 46 D9 9B B0 5E DD 9B EC 4E D8 9B EC 46 D9 9B -- 0764F0
1E DC 2E 9B E8 56 D9 9B B0 46 DC 9B F0 4E D8 9B -- 076500
D9 9B 02 8A E9 C0 2B 05 75 00 5C ED 94 9A 61 8C -- 076510
D8 9B B8 46 D9 9B E0 5E D9 9B C0 4E D8 9B C0 46 -- 076520
94 9A B8 5E D8 9B C0 46 D9 9B DC 5E D9 9B B8 4E -- 076530
D8 9B E0 46 D9 9B 0C EB EE D9 9B 05 75 00 5C ED -- 076540
5E DD 9B EE D9 9B E4 5E D9 9B E8 76 D8 9B DC 66 -- 076550
46 D9 9B B0 5E DD 9B E4 4E D8 9B E4 46 D9 9B A8 -- 076560
9B E8 76 D8 9B 61 9C 0E DC 2E 9B DC 46 D8 9B E0 -- 076570
5E DC 9B D8 56 D9 9B 61 A4 26 DC 2E 9B B0 66 DC -- 076580
46 D9 9B 02 0B E9 C0 2B 05 73 00 5C ED 94 9A A8 -- 076590
DD 9B 08 C4 83 00 64 4E FE 9A 00 5C ED 99 9A D8 -- 0765A0
2E 9B A8 5E DD 9B A0 4E DC 9B F0 46 D9 9B A0 5E -- 0765B0
EC 46 D9 9B B0 5E DD 9B E4 66 D8 9B 61 A4 06 DD -- 0765C0
D8 9B 61 9C 36 DC 2E 9B A8 46 DC 9B B0 4E DC 9B -- 0765D0
9A 00 5C ED 99 9A D8 46 D9 9B D4 5E D9 9B BC 46 -- 0765E0
9B F0 46 D9 9B A0 5E DD 9B 08 C4 83 00 64 4E FE -- 0765F0
9B 61 A4 06 DD 2E 9B A8 5E DD 9B A0 4E DC 01 FE -- 076600
9B B0 4E DC 9B EC 46 D9 9B B0 5E DD 9B E4 66 D8 -- 076610
5E D9 9B BC 46 D8 9B 61 9C 36 DC 2E 9B A8 66 DC -- 076620
7C 02 FC 7E 83 FC 46 FF 03 EB 00 00 FC 46 C7 D0 -- 076630
D8 9B D4 46 D9 9B 1F 74 00 FC 7E 83 01 64 E9 03 -- 076640
9B 04 EB D4 46 D9 9B 06 76 00 5C ED 94 9A D0 5E -- 076650
5E D8 9B D4 46 D9 9B 1D EB F4 5E D9 9B D0 46 D9 -- 076660
D9 9B 04 EB D4 46 D9 9B 06 73 00 5C ED 94 9A D0 -- 076670
50 00 36 05 0E 46 8B 10 76 FF F4 5E D9 9B D0 46 -- 076680
0A 46 8B 0C 76 FF 50 00 2E 05 0E 46 8B 10 76 FF -- 076690
8D 16 50 00 2E 05 0A 46 8B 0C 76 FF 50 00 36 05 -- 0766A0
E9 03 75 C0 0B 14 C4 83 00 4C 5C 9C 9A 50 F4 46 -- 0766B0
FF 0C 76 FF 50 F4 46 8D 16 50 F8 46 8D 16 FF 76 -- 0766C0
16 50 CC 46 8D 16 0C C4 83 00 4C 5D 40 9A 0A 76 -- 0766D0
```

524

```
83 00 4C 5D 40 9A 0E 76 FF 10 76 FF 50 F4 46 8D -- 0766E0
66 D8 9B F8 46 D9 9B B0 5E DD 9B EE D9 9B 0C C4 -- 0766F0
F8 46 D9 9B 0A 76 00 5C ED 94 9A B0 5E DC 9B CC -- 076700
D9 9B CC 66 D8 9B F8 46 D9 9B 0B EB CC 66 D8 9B -- 076710
07 E9 03 72 00 5C ED 94 9A 61 94 1E DC 2E 9B E0 -- 076720
C8 46 8D 16 50 C4 46 8D 16 21 75 FF FE 7E 83 FF -- 076730
59 54 9A 0A 76 FF 0C 76 FF 0E 76 FF 10 76 FF 50 -- 076740
8D 16 45 74 00 FE 7E 83 FE 46 89 10 C4 83 00 4C -- 076750
46 8D 16 50 F4 46 8D 16 50 C8 46 8D 16 50 C4 46 -- 076760
83 00 4C 5D FD 9A 01 6A 0A 76 FF 0C 76 FF 50 F8 -- 076770
83 FE A9 E9 03 74 00 14 7E 83 18 74 C0 0B 16 C4 -- 076780
01 B8 0C EB C0 2B 10 EB 00 01 B8 05 75 00 12 7E -- 076790
56 CB 5E 5F C9 9B C0 2B 02 EB 00 01 B8 07 EB 00 -- 0767A0
C5 FC 5E D9 9B 05 D9 9B 0E 7E C5 00 00 40 C8 57 -- 0767B0
05 D9 9B 12 7E C5 F8 5E D9 9B 08 45 D9 9B 0E 7E -- 0767C0
83 F0 5E D9 9B 08 45 D9 9B 12 7E C5 F4 5E D9 9B -- 0767D0

9B 04 45 D9 9B 0E 7E C5 00 B6 E9 03 74 01 0A 7E -- 0767E0
7E C5 E8 5E D9 9B 0C 45 D9 9B 0E 7E C5 EC 5E D9 -- 0767F0
D9 9B 12 7E C5 E4 5E D9 9B 04 45 D9 9B 12 01 FE -- 076800
94 9A E0 5E D8 9B E4 46 D9 9B E0 5E D9 9B 0C 45 -- 076810
9B E0 46 D9 9B 04 EB E4 46 D9 9B 06 73 00 5C ED -- 076820
00 5C ED 94 9A E8 5E D8 9B EC 46 D9 9B C8 5E DD -- 076830
C8 5E DC 9B E8 46 D9 9B 04 EB EC 46 D9 9B 06 76 -- 076840
9A E0 5E D8 9B E4 46 D9 9B 44 72 00 5C ED 94 9A -- 076850
E0 46 D9 9B 04 EB E4 46 D9 9B 06 76 00 5C ED 94 -- 076860
5C ED 94 9A E8 5E D8 9B EC 46 D9 9B C0 5E DD 9B -- 076870
5E DC 9B E8 46 D9 9B 04 EB EC 46 D9 9B 06 73 00 -- 076880
03 CB E9 C0 2B 00 8C E9 03 77 00 5C ED 94 9A C0 -- 076890
9B 06 73 00 5C ED 94 9A F0 5E D8 9B F4 46 D9 9B -- 0768A0
46 D9 9B C8 5E DD 9B F0 46 D9 9B 04 EB F4 46 D9 -- 0768B0
FC 46 D9 9B 06 76 00 5C ED 94 9A F8 5E D8 9B FC -- 0768C0
72 00 5C ED 94 9A C8 5E DC 9B F8 46 D9 9B 04 EB -- 0768D0
06 76 00 5C ED 94 9A F0 5E D8 9B F4 46 D9 9B 41 -- 0768E0
D9 9B C0 5E DD 9B F0 46 D9 9B 04 EB F4 46 D9 9B -- 0768F0
46 D9 9B 06 73 00 5C ED 94 9A F8 5E D8 9B FC 46 -- 076900
00 5C ED 94 9A C0 5E DC 9B F8 46 D9 9B 04 EB FC -- 076910
46 D9 9B 03 29 E9 0A 46 8B 03 44 E9 C0 2B 05 76 -- 076920
E4 46 D9 9B 06 73 00 5C ED 94 9A E0 5E D8 9B E4 -- 076930
D8 9B EC 46 D9 9B C8 5E DD 9B E0 46 D9 9B 04 EB -- 076940
9B 04 EB EC 46 D9 9B 06 76 00 5C ED 94 9A E8 5E -- 076950
D9 9B 41 74 00 5C ED 94 9A C8 5E DC 9B E8 46 D9 -- 076960
46 D9 9B 06 73 00 5C ED 94 9A E8 5E D8 9B EC 46 -- 076970
9B E4 46 D9 9B C0 5E DD 9B E8 46 D9 9B 04 EB EC -- 076980
04 EB E4 46 D9 9B 06 76 00 5C ED 94 9A E0 5E D8 -- 076990
83 11 75 00 5C ED 94 9A C0 5E DC 9B E0 46 D9 9B -- 0769A0
02 AB E9 C0 2B 02 B0 E9 00 01 B8 06 75 00 0C 7E -- 0769B0
94 9A F0 5E D8 9B F4 46 D9 9B 02 A5 E9 00 01 B8 -- 0769C0
9B F0 46 D9 9B 04 EB F4 46 D9 9B 06 73 00 5C ED -- 0769D0
00 5C ED 94 9A F8 5E D8 9B FC 46 D9 9B C8 5E DD -- 0769E0
C8 5E DC 9B F8 46 D9 9B 04 EB FC 46 D9 9B 06 76 -- 0769F0
5E D8 9B FC 46 D9 9B 41 74 00 5C ED 94 9A 01 FE -- 076A00
D9 9B 04 EB FC 46 D9 9B 06 73 00 5C ED 94 9A F8 -- 076A10
94 9A F0 5E D8 9B F4 46 D9 9B C0 5E DD 9B F8 46 -- 076A20
9B F0 46 D9 9B 04 EB F4 46 D9 9B 06 76 00 5C ED -- 076A30
06 75 00 0C 7E 83 11 75 00 5C ED 94 9A C0 5E DC -- 076A40
0C E9 00 01 B8 02 12 E9 C0 2B 02 17 E9 00 01 B8 -- 076A50
9B 0E 7E C5 EC 5E D9 9B 04 45 D9 9B 0E 7E C5 02 -- 076A60
D9 9B 04 45 D9 9B 12 7E C5 E8 5E D9 9B 0C 45 D9 -- 076A70
46 D9 9B E0 5E D9 9B 0C 45 D9 9B 12 7E C5 E4 5E -- 076A80
```

```
EC  46  D9  9B  OF  75  00  5C  ED  94  9A  F4  5E  D8  9B  FC  --  076A90
9B  FC  46  D9  9B  5A  74  00  5C  ED  94  9A  E4  5E  D8  9B  --  076AA0
D8  9B  EC  46  D9  9B  OF  75  00  5C  ED  94  9A  FO  5E  D8  --  076AB0
5E  D8  9B  F8  46  D9  9B  3C  74  00  5C  ED  94  9A  EO  5E  --  076AC0
E4  5E  D8  9B  E8  46  D9  9B  OF  75  00  5C  ED  94  9A  F4  --  076AD0
9A  FO  5E  D8  9B  F8  46  D9  9B  1E  74  00  5C  ED  94  9A  --  076AE0
94  9A  EO  5E  D8  9B  E8  46  D9  9B  20  75  00  5C  ED  94  --  076AF0
5C  E9  00  01  B8  06  75  00  OC  7E  83  11  75  00  5C  ED  --  076B00
06  DC  2E  9B  05  D9  9B  16  7E  C5  01  57  E9  CO  2B  01  --  076B10
06  DC  2E  9B  05  D9  9B  1A  7E  C5  DC  5E  D9  9B  61  AC  --  076B20
26  DC  2E  9B  05  D9  9B  16  7E  C5  D8  5E  D9  9B  61  AC  --  076B30
26  DC  2E  9B  05  D9  9B  1A  7E  C5  D4  5E  D9  9B  61  AC  --  076B40
94  9A  DC  5E  D8  9B  FC  46  D9  9B  DO  5E  D9  9B  61  AC  --  076B50
ED  94  9A  F8  5E  D8  9B  D4  46  D9  9B  OF  77  00  5C  ED  --  076B60
5C  ED  94  9A  DC  5E  D8  9B  F8  46  D9  9B  24  76  00  5C  --  076B70

94  9A  FC  5E  D8  9B  D4  46  D9  9B  00  CE  E9  03  76  00  --  076B80
DC  5E  D8  9B  F4  46  D9  9B  00  BC  E9  03  76  00  5C  ED  --  076B90
9A  FO  5E  D8  9B  D4  46  D9  9B  OF  77  00  5C  ED  94  9A  --  076BA0
94  9A  DC  5E  D8  9B  FO  46  D9  9B  21  76  00  5C  ED  94  --  076BB0
F4  5E  D8  9B  D4  46  D9  9B  00  8C  E9  03  76  00  5C  ED  --  076BC0
9A  D8  5E  D8  9B  EC  46  D9  9B  7D  77  00  5C  ED  94  9A  --  076BD0
94  9A  E8  5E  D8  9B  DO  46  D9  9B  OF  77  00  5C  ED  94  --  076BE0
ED  94  9A  D8  5E  D8  9B  E8  46  D9  9B  1E  76  00  5C  ED  --  076BF0
94  9A  EC  5E  D8  9B  DO  46  D9  9B  50  77  00  5C  01  FE  --  076C00
ED  94  9A  D8  5E  D8  9B  E4  46  D9  9B  41  77  00  5C  ED  --  076C10
5C  ED  94  9A  EO  5E  D8  9B  DO  46  D9  9B  OF  77  00  5C  --  076C20
00  5C  ED  94  9A  D8  5E  D8  9B  EO  46  D9  9B  1E  76  00  --  076C30
77  00  5C  ED  94  9A  E4  5E  D8  9B  DO  46  D9  9B  14  77  --  076C40
OF  77  00  02  3D  48  15  EB  CO  2B  19  EB  00  01  B8  05  --  076C50
9B  56  F5  56  5C  55  C3  58  FB  A7  FF  2E  D8  8B  EO  D1  --  076C60
OA  7E  C5  OE  76  C4  00  00  10  C8  57  56  CB  5E  5F  C9  --  076C70
OE  76  C4  FO  5E  DD  9B  2A  64  D8  26  9B  2A  45  D9  9B  --  076C80
2E  44  D8  26  9B  FO  4E  DC  9B  1E  45  D9  9B  OE  7E  C5  --  076C90
9A  F8  5E  DC  9B  2E  45  D9  9B  OA  7E  C5  F8  5E  DD  9B  --  076CA0
5F  C9  9B  CO  2B  02  EB  00  01  B8  05  75  00  5C  ED  94  --  076CB0
D9  9B  OA  7E  C5  OE  76  C4  00  00  02  C8  57  56  CB  5E  --  076CC0
C5  OE  76  C4  19  75  00  5C  ED  94  9A  1C  D8  26  9B  05  --  076CD0
00  5C  ED  94  9A  04  5C  D8  26  9B  04  45  D9  9B  OA  7E  --  076CE0
9B  08  45  D9  9B  OA  7E  C5  OE  76  C4  00  82  E9  03  75  --  076CF0
OA  7E  C5  OE  76  C4  16  75  00  5C  ED  94  9A  1C  D8  26  --  076D00
57  74  00  5C  ED  94  9A  04  5C  D8  26  9B  OC  45  D9  9B  --  076D10
94  9A  08  5C  D8  26  9B  05  D9  9B  OA  7E  C5  OE  76  C4  --  076D20
9B  04  45  D9  9B  OA  7E  C5  OE  76  C4  16  75  00  5C  ED  --  076D30
7E  C5  OE  76  C4  2C  74  00  5C  ED  94  9A  OC  5C  D8  26  --  076D40
75  00  5C  ED  94  9A  08  5C  D8  26  9B  08  45  D9  9B  OA  --  076D50
OC  5C  D8  26  9B  OC  45  D9  9B  OA  7E  C5  OE  76  C4  1B  --  076D60
46  89  CO  2B  02  EB  00  01  B8  05  75  00  5C  ED  94  9A  --  076D70
D9  9B  OA  7E  C5  OE  76  C4  00  8A  E9  03  75  CO  OB  FE  --  076D80
C5  OE  76  C4  16  75  00  5C  ED  94  9A  1C  D8  26  9B  05  --  076D90
00  5C  ED  94  9A  04  5C  D8  26  9B  04  45  D9  9B  OA  7E  --  076DA0
08  5C  D8  26  9B  05  D9  9B  OA  7E  C5  OE  76  C4  2B  74  --  076DB0
45  D9  9B  OA  7E  C5  OE  76  C4  31  75  00  5C  ED  94  9A  --  076DC0
OA  7E  C5  1B  75  00  5C  ED  94  9A  OC  5C  D8  26  9B  04  --  076DD0
04  45  D9  9B  OA  7E  C5  1D  D9  9B  12  7E  C5  05  D9  9B  --  076DE0
C5  08  45  D9  9B  OA  7E  C5  1A  EB  1D  D9  9B  16  7E  C5  --  076DF0
7E  C5  OC  45  D9  9B  OA  7E  C5  1D  D9  9B  12  7E  01  FE  --  076E00
2C  C8  57  56  CB  5E  5F  C9  9B  FE  46  8B  1D  D9  9B  16  --  076E10
9B  16  7E  C5  FO  5E  D9  9B  05  D9  9B  12  7E  C5  00  00  --  076E20
5E  D9  9B  2A  45  D9  9B  OA  7E  C5  EC  5E  D9  9B  05  D9  --  076E30
```

```
F8 46 D9 9B F4 5E D9 9B 2E 45 D9 9B 0A 7E C5 F8 -- 076E40
9B F4 46 D9 9B 12 75 00 5C ED 94 9A F0 5E D8 9B -- 076E50
0A 7E C5 01 27 E9 03 75 00 5C ED 94 9A EC 5E D8 -- 076E60
C5 15 75 00 5C ED 94 9A 32 5D D8 9B F0 46 D9 9B -- 076E70
75 00 5C ED 94 9A 36 5D D8 9B EC 46 D9 9B 0A 7E -- 076E80
9B F8 66 D8 9B 32 45 D9 9B 0A 7E C5 01 00 E9 03 -- 076E90
2C 75 00 5C ED 94 9A 61 8C 1E DC 2E 9B FC 56 D9 -- 076EA0
9B 0A 7E C5 E4 5E DD 9B F8 66 D8 9B F0 46 D9 9B -- 076EB0
ED 94 9A 61 8C 1E DC 2E 9B E4 4E DC 9B 18 45 DF -- 076EC0
9B 0A 7E C5 01 2B E9 C0 2B 00 BD E9 03 72 00 5C -- 076ED0
9B FC 5E D9 9B FC 76 D8 9B 36 65 D8 9B F4 46 D9 -- 076EE0
94 9A E4 5E DC 9B FC 46 D9 9B E4 5E DD 9B EE D9 -- 076EF0
5E DD 9B F8 66 D8 9B F0 46 D9 9B 48 76 00 5C ED -- 076F00
F4 46 D8 9B D4 4E DC 9B E0 D9 9B FC 46 D9 9B D4 -- 076F10

E4 5E DD 9B DC 66 DC 9B EC 46 D9 9B DC 5E DD 9B -- 076F20
8C 1E DC 2E 9B E4 4E DC 9B 18 45 DF 9B 0A 7E C5 -- 076F30
46 D9 9B 00 BA E9 C0 2B 4C 73 00 5C ED 94 9A 61 -- 076F40
E0 D9 9B FC 46 D9 9B D4 5E DD 9B F8 66 D8 9B F0 -- 076F50
EC 46 D9 9B DC 5E DD 9B F4 46 D8 9B D4 4E DC 9B -- 076F60
9B 18 45 DF 9B 0A 7E C5 E4 5E DD 9B DC 66 DC 9B -- 076F70
04 76 00 5C ED 94 9A 61 8C 1E DC 2E 9B E4 4E DC -- 076F80
9A 2E 5D D8 9B EC 46 D9 9B 0E 7E C5 73 EB C0 2B -- 076F90
5D D8 9B EC 46 D9 9B 0E 7E C5 5F 72 00 5C ED 94 -- 076FA0
9B F0 46 D9 9B 0E 7E C5 4D 77 00 5C ED 94 9A 36 -- 076FB0
46 D9 9B 0E 7E C5 12 72 00 5C ED 94 9A 2A 5D D8 -- 076FC0
9B 0E 7E C5 24 76 00 5C ED 94 9A 32 5D D8 9B F0 -- 076FD0
7E C5 17 72 00 5C ED 94 9A 32 5D D8 9B F0 46 D9 -- 076FE0
05 77 00 5C ED 94 9A 2A 5D D8 9B F0 46 D9 9B 0E -- 076FF0
57 56 CB 5E 5F C9 9B C0 2B 02 EB 00 01 B8 01 FE -- 077000
7E C5 FC 5E D9 9B 05 D9 9B 0A 7E C5 00 00 04 C8 -- 077010
C5 11 77 00 5C ED 94 9A 1D D8 9B FC 46 D9 9B 12 -- 077020
22 73 00 5C ED 94 9A 1D D8 9B FC 46 D9 9B 0E 7E -- 077030
77 00 5C ED 94 9A 1D D8 9B FC 46 D9 9B 0E 7E C5 -- 077040
00 5C ED 94 9A 1D D8 9B FC 46 D9 9B 12 7E C5 5A -- 077050
5C ED 94 9A 1D D8 9B FC 46 D9 9B 1A 7E C5 49 72 -- 077060
ED 94 9A 1D D8 9B FC 46 D9 9B 16 7E C5 11 77 00 -- 077070
94 9A 1D D8 9B FC 46 D9 9B 16 7E C5 22 73 00 5C -- 077080
9A 1D D8 9B FC 46 D9 9B 1A 7E C5 16 77 00 5C ED -- 077090
5F C9 9B C0 2B 02 EB 00 01 B8 05 72 00 5C ED 94 -- 0770A0
D9 9B 0E 7E C5 0A 76 C4 00 00 10 C8 57 56 CB 5E -- 0770B0
0A 7E C5 10 75 00 5C ED 94 9A 2E 5C D8 26 9B 05 -- 0770C0
0A 76 C4 00 8D E9 1D D9 9B 12 7E C5 2A 45 D9 9B -- 0770D0
00 5C ED 94 9A 36 5C D8 26 9B 05 D9 9B 0E 7E C5 -- 0770E0
EB 1D D9 9B 12 7E C5 32 45 D9 9B 0A 7E C5 0F 75 -- 0770F0
9B 14 64 D8 26 9B 05 D9 9B 0E 7E C5 0A 76 C4 69 -- 077100
C4 F0 5E DD 9B FC 4E D8 9B FC 46 D9 9B FC 5E D9 -- 077110
DC 9B 26 4C D8 26 9B 26 45 D9 9B 0A 7E C5 0A 76 -- 077120
9B 08 C4 83 00 64 4E FE 9A 00 5C ED 99 9A F0 66 -- 077130
9B 0A 7E C5 0D 7D 00 18 7D 83 0A 7E C5 F8 5E D9 -- 077140
10 45 D9 9B 0A 7E C5 0B EB F8 66 D8 9B 10 45 D9 -- 077150
56 CB 5E 5F C9 9B 1D D9 9B 12 7E C5 F8 46 D8 9B -- 077160
D9 9B 01 60 E9 03 74 01 0A 7E 83 00 00 18 C8 57 -- 077170
26 9B 05 D9 9B 10 7E C5 0C 76 C4 F0 5E DD 9B EE -- 077180
0C 76 C4 0F 76 00 5C ED 94 9A F0 5E DC 9B 24 D8 -- 077190
C5 0C 76 C4 10 EB 24 D8 26 9B 05 D9 9B 10 7E C5 -- 0771A0
1E DC 2E 9B E0 D9 9B 24 D8 26 9B 05 D9 9B 10 7E -- 0771B0
C0 2B 02 EB 00 01 B8 05 73 00 5C ED 94 9A 61 94 -- 0771C0
14 7E C5 0C 76 C4 F0 5E DD 9B EE D9 9B FE 46 89 -- 0771D0
5C ED 94 9A F0 5E DC 9B 04 64 D8 26 9B 05 D9 9B -- 0771E0
```

527

```
64  D8  26  9B  05  D9  9B  14  7E  C5  0C  76  C4  10  76  00  --  0771F0
26  9B  05  D9  9B  14  7E  C5  0C  76  C4  11  EB  04  01  FE  --  077200
5C  ED  94  9A  61  94  1E  DC  2E  9B  E0  D9  9B  04  64  D8  --  077210
EE  D9  9B  FC  46  89  C0  2B  02  EB  00  01  B8  05  73  00  --  077220
D8  26  9B  05  D9  9B  10  7E  C5  0C  76  C4  F0  5E  DD  9B  --  077230
0C  76  C4  10  76  00  5C  ED  94  9A  F0  5E  DC  9B  08  64  --  077240
0C  76  C4  11  EB  08  64  D8  26  9B  05  D9  9B  10  7E  C5  --  077250
2E  9B  E0  D9  9B  08  64  D8  26  9B  05  D9  9B  10  7E  C5  --  077260
02  EB  00  01  B8  05  73  00  5C  ED  94  9A  61  94  1E  DC  --  077270
C5  0C  76  C4  F0  5E  DD  9B  EE  D9  9B  FA  46  89  C0  2B  --  077280
94  9A  F0  5E  DC  9B  0C  64  D8  26  9B  05  D9  9B  14  7E  --  077290
26  9B  05  D9  9B  14  7E  C5  0C  76  C4  10  76  00  5C  ED  --  0772A0
26  9B  05  D9  9B  14  7E  C5  0C  76  C4  11  EB  0C  64  D8  --  0772B0

5C  ED  94  9A  61  94  1E  DC  2E  9B  E0  D9  9B  0C  64  D8  --  0772C0
01  60  E9  F8  46  89  C0  2B  02  EB  00  01  B8  05  73  00  --  0772D0
05  D9  9B  10  7E  C5  0C  76  C4  F0  5E  DD  9B  EE  D9  9B  --  0772E0
10  76  00  5C  ED  94  9A  F0  5E  DC  9B  2A  64  D8  26  9B  --  0772F0
11  EB  2A  64  D8  26  9B  05  D9  9B  10  7E  C5  0C  76  C4  --  077300
D9  9B  2A  64  D8  26  9B  05  D9  9B  10  7E  C5  0C  76  C4  --  077310
01  B8  05  73  00  5C  ED  94  9A  61  94  1E  DC  2E  9B  E0  --  077320
C4  F0  5E  DD  9B  EE  D9  9B  FE  46  89  C0  2B  02  EB  00  --  077330
5E  DC  9B  2E  64  D8  26  9B  05  D9  9B  14  7E  C5  0C  76  --  077340
D9  9B  14  7E  C5  0C  76  C4  10  76  00  5C  ED  94  9A  F0  --  077350
D9  9B  14  7E  C5  0C  76  C4  11  EB  2E  64  D8  26  9B  05  --  077360
9A  61  94  1E  DC  2E  9B  E0  D9  9B  2E  64  D8  26  9B  05  --  077370
FC  46  89  C0  2B  02  EB  00  01  B8  05  73  00  5C  ED  94  --  077380
05  D9  9B  10  7E  C5  0C  76  C4  F0  5E  DD  9B  EE  D9  9B  --  077390
10  76  00  5C  ED  94  9A  F0  5E  DC  9B  32  64  D8  26  9B  --  0773A0
11  EB  32  64  D8  26  9B  05  D9  9B  10  7E  C5  0C  76  C4  --  0773B0
D9  9B  32  64  D8  26  9B  05  D9  9B  10  7E  C5  0C  76  C4  --  0773C0
01  B8  05  73  00  5C  ED  94  9A  61  94  1E  DC  2E  9B  E0  --  0773D0
C4  F0  5E  DD  9B  EE  D9  9B  FA  46  89  C0  2B  02  EB  00  --  0773E0
5E  DC  9B  36  64  D8  26  9B  05  D9  9B  14  7E  C5  0C  76  --  0773F0
14  7E  C5  0C  76  C4  10  76  00  5C  ED  94  9A  F0  01  FE  --  077400
14  7E  C5  0C  76  C4  11  EB  36  64  D8  26  9B  05  D9  9B  --  077410
94  1E  DC  2E  9B  E0  D9  9B  36  64  D8  26  9B  05  D9  9B  --  077420
89  C0  2B  02  EB  00  01  B8  05  73  00  5C  ED  94  9A  61  --  077430
7E  83  12  75  00  FC  7E  83  06  74  00  FE  7E  83  F8  46  --  077440
00  9B  E9  03  75  00  F8  7E  83  00  A4  E9  03  75  00  FA  --  077450
05  D9  9B  10  7E  C5  18  76  C4  F0  5E  DD  9B  EE  D9  9B  --  077460
C4  0F  76  00  5C  ED  94  9A  F0  5E  DC  9B  24  D8  26  9B  --  077470
76  C4  10  EB  24  D8  26  9B  05  D9  9B  10  7E  C5  18  76  --  077480
2E  9B  E0  D9  9B  24  D8  26  9B  05  D9  9B  10  7E  C5  18  --  077490
DD  9B  EE  D9  9B  50  73  00  5C  ED  94  9A  61  94  1E  DC  --  0774A0
9B  24  D8  26  9B  05  D9  9B  14  7E  C5  1C  76  C4  E8  5E  --  0774B0
14  7E  C5  1C  76  C4  0F  76  00  5C  ED  94  9A  E8  5E  DC  --  0774C0
9B  14  7E  C5  1C  76  C4  10  EB  24  D8  26  9B  05  D9  9B  --  0774D0
9A  61  94  1E  DC  2E  9B  E0  D9  9B  24  D8  26  9B  05  D9  --  0774E0
5F  C9  9B  C0  2B  02  EB  00  01  B8  05  73  00  5C  ED  94  --  0774F0
99  99  99  99  99  9A  00  00  00  00  00  00  00  00  CB  5E  --  077500
00  00  00  00  00  00  40  00  00  00  00  00  00  00  3F  A9  --  077510
00  00  B4  C8  57  56  3F  1A  36  E2  EB  1C  43  2D  3F  F0  --  077520
FF  4C  86  C7  00  00  FF  4E  86  C7  00  00  FF  76  86  C7  --  077530
02  3D  05  74  00  0A  3D  05  8B  76  AE  3E  C5  2E  00  00  --  077540
76  B2  3E  C5  2E  0B  EB  00  00  FF  74  86  C7  08  75  00  --  077550
10  74  00  3D  83  76  B6  3E  C5  2E  FF  74  86  89  05  8B  --  077560
00  01  05  C7  76  BA  3E  C5  2E  09  75  00  FF  74  BE  83  --  077570
C8  36  FF  2E  66  6A  2B  74  00  3D  83  76  BE  3E  C5  2E  --  077580
76  C2  36  FF  2E  76  C4  36  FF  2E  76  C6  36  FF  2E  76  --  077590
```

528

```
BA 3E C5 2E 09 74 C0 0B 0A C4 83 00 54 3C 28 9A -- 0775A0
08 6A 01 44 E9 03 74 01 0A 7E 83 00 01 05 C7 76 -- 0775B0
9A 50 F8 46 8D 16 76 CA 36 FF 2E 76 CC 36 FF 2E -- 0775C0
D2 36 FF 2E 76 D4 36 FF 2E 0A C4 83 00 5C ED 6E -- 0775D0
76 CE 3E C5 2E 76 CA 36 FF 2E 76 CC 36 FF 2E 76 -- 0775E0
2E 0E C4 83 00 64 3D BA 9A 01 31 68 03 6A 35 FF -- 0775F0
3E C5 2E 28 74 61 03 3D 05 8B 76 D2 3E C5 01 FE -- 077600
74 00 3D 83 76 D6 3E C5 2E 0A 75 00 3D 83 76 CA -- 077610
76 DE 3E C5 2E 46 75 00 3D 83 76 DA 3E C5 2E 14 -- 077620
2E 32 75 00 3D 83 76 E2 3E C5 2E 3C 75 00 3D 83 -- 077630
3D 83 76 E6 3E C5 2E 28 75 00 3D 83 76 B6 3E C5 -- 077640
2A BB 9A 76 D2 36 FF 2E 76 D4 36 FF 2E 15 75 00 -- 077650

93 E9 00 01 FF 76 86 C7 04 38 E9 04 C4 83 00 64 -- 077660
61 03 3D 05 8B 1B 74 00 3D 83 76 D2 3E C5 2E 00 -- 077670
00 64 28 52 9A 50 00 6A 00 6A 00 6A 00 6A 14 74 -- 077680
0D 75 00 3D 83 76 E6 3E C5 2E 04 0A E9 0A C4 83 -- 077690
3E C5 2E 00 01 FF 4C 86 C7 06 74 00 FF 74 BE 83 -- 0776A0
00 01 3D 05 8B 76 B6 3E C5 2E 00 00 05 C7 76 E6 -- 0776B0
CA 3E C5 2E 38 75 00 3D 83 76 D2 3E C5 2E 42 75 -- 0776C0
8B 76 DA 3E C5 2E 05 89 02 7D 05 3B F8 46 8B 76 -- 0776D0
FA 46 8B 76 D6 3E C5 2E 05 89 02 7D 05 3B FC 46 -- 0776E0
05 3B FE 46 8B 76 DE 3E C5 2E 05 89 02 7E 05 3B -- 0776F0
C5 2E 02 C4 83 00 44 D1 01 9A 01 6A 05 89 02 7E -- 077700
04 C4 83 00 44 CE 0E 9A 35 FF 02 75 FF 76 EA 3E -- 077710
AA 3D 05 8B 76 EE 3E C5 2E 0C 74 01 FF 76 BE 83 -- 077720
C5 2E 00 64 2B 7A 9A 00 00 FF 76 86 C7 0B 75 07 -- 077730
8D 16 0E 74 00 FF 74 BE 83 00 00 05 C7 76 EE 3E -- 077740
F2 3E C5 2E 04 C4 83 00 4C 70 A0 9A 50 FF 4E 86 -- 077750
36 FF 2E 76 F8 36 FF 2E 24 6A 0E 74 00 3D 83 76 -- 077760
76 FA 36 FF 2E 76 FC 36 FF 2E 24 6A 0C EB 76 F6 -- 077770
00 6A 0A C4 83 00 5C ED 6E 9A 50 FF 50 86 8D 16 -- 077780
2E 77 00 36 FF 2E 00 6A 00 6A 00 6A 00 6A 00 6A -- 077790
D2 3E C5 2E 10 C4 83 00 5C A2 86 9A 76 FE 36 FF -- 0777A0
00 6A 00 6A 00 6A 00 6A 11 74 00 3D 83 05 89 76 -- 0777B0
48 74 00 FF 4C BE 83 0A C4 83 00 64 28 52 9A 50 -- 0777C0
83 00 4C 75 99 9A 50 FF 50 86 8D 16 FF 4E B6 FF -- 0777D0
5C 94 D5 9A 77 02 36 FF 2E 77 04 36 FF 2E 06 C4 -- 0777E0
03 74 00 01 3D 05 8B 77 06 3E C5 2E 04 C4 83 00 -- 0777F0
9A 00 6A 00 6A 00 6A 00 6A 00 6A 01 6D E9 01 FE -- 077800
83 76 E6 3E C5 2E 01 58 E9 0A C4 83 00 64 3A 84 -- 077810
16 FF 4E B6 FF 14 74 00 FF 74 BE 83 44 75 00 3D -- 077820
2E 29 EB 06 C4 83 00 4C 74 04 9A 50 FF 50 86 8D -- 077830
24 9A 50 FF 50 86 8D 16 00 04 05 C7 77 0A 3E C5 -- 077840
77 02 36 FF 2E 77 04 36 FF 2E 04 C4 83 00 4C 71 -- 077850
36 FF 2E 00 44 C7 01 9A 04 C4 83 00 5C 94 D5 9A -- 077860
6A 04 C4 83 00 5C 94 D5 9A 77 0E 36 FF 2E 77 10 -- 077870
FF 78 86 8D 16 76 C2 36 FF 2E 76 C4 36 FF 2E 66 -- 077880
77 14 36 FF 2E 12 6A 0A C4 83 00 5C ED 6E 9A 50 -- 077890
83 00 5C ED 6E 9A 50 DE 46 8D 16 77 12 36 FF 2E -- 0778A0
1A 3E C5 2E F0 46 89 05 8B 77 16 3E C5 2E 0A C4 -- 0778B0
83 76 BA 3E C5 2E 00 00 05 C7 F6 46 89 05 8B 77 -- 0778C0
01 B8 05 74 00 3D 83 77 1E 3E C5 2E 0A 75 00 3D -- 0778D0
89 77 1E 3E C5 2E C0 2B F4 46 89 C0 2B 02 EB 00 -- 0778E0
3D 05 8B 77 06 3E C5 2E 05 89 76 BA 3E C5 2E 05 -- 0778F0
8D 16 00 80 68 0C 74 00 FF 4C BE 83 29 75 00 01 -- 077900
50 FF 78 86 8D 16 00 80 68 FE F4 E9 50 FF 78 86 -- 077910
C8 5F 9A FE E2 E9 77 22 36 FF 2E 77 24 36 FF 2E -- 077920
C4 36 FF 2E 00 64 22 FA 9A 00 54 C8 76 9A 00 54 -- 077930
16 00 80 68 00 6A 00 6A 00 6A 76 C2 36 FF 2E 76 -- 077940
```

```
77 28 36 FF 2E 04 6A 0A 6A 04 6A 50 FF 78 86 8D -- 077950
23 34 9A 1A C4 83 00 5C A6 44 9A 77 26 36 FF 2E -- 077960
FF 2E 00 6A 27 74 00 3D 83 77 2A 3E C5 2E 00 64 -- 077970
36 FF 2E 77 30 36 FF 2E 77 32 36 FF 2E 77 34 36 -- 077980
C7 77 2A 3E C5 2E 0A C4 83 00 5C 94 FB 9A 77 2E -- 077990
2E 00 6A 27 74 00 3D 83 77 36 3E C5 2E 00 00 05 -- 0779A0
FF 2E 77 30 36 FF 2E 77 3A 36 FF 2E 77 3C 36 FF -- 0779B0
77 36 3E C5 2E 0A C4 83 00 5C 94 FB 9A 77 2E 36 -- 0779C0
3E C5 2E 00 00 05 C7 77 3E 3E C5 2E 00 00 05 C7 -- 0779D0
C7 00 00 05 C7 77 42 3E C5 2E 00 00 05 C7 77 1A -- 0779E0
6A 00 6A 00 00 05 C7 76 E6 3E C5 2E 00 00 02 45 -- 0779F0

77 48 36 FF 2E 00 6A 00 6A 00 6A 00 6A 00 01 FE -- 077A00
3E C5 2E 10 C4 83 00 5C A2 86 9A 77 46 36 FF 2E -- 077A10
6A 00 6A 00 6A 00 6A 11 74 00 3D 83 05 89 76 D2 -- 077A20
CC 36 FF 2E 57 56 0A C4 83 00 64 28 52 9A 50 00 -- 077A30
5F 00 8C 00 02 9A 08 6A 00 6A 76 CA 36 FF 2E 76 -- 077A40
C7 77 4A 3E C5 2E 00 00 05 C7 76 E2 3E C5 2E 5E -- 077A50
2B 34 9A 76 D2 36 FF 2E 76 D4 36 FF 2E 00 01 05 -- 077A60
C5 2E 05 89 76 B6 3E C5 2E C0 2B 04 C4 83 00 64 -- 077A70
56 3E C5 2E C0 2B 00 4C 30 34 9A 05 89 77 4E 3E -- 077A80
9A 00 44 D0 EA 9A 05 89 77 52 3E C5 2E 05 89 77 -- 077A90
57 56 00 00 10 C8 57 56 CB 5E 5F C9 00 44 D0 F8 -- 077AA0
5E 5F 00 8C 00 02 9A 0E 6A 00 6A 50 F0 46 8D 16 -- 077AB0
16 06 C4 83 00 5C D0 03 9A 0E 6A 50 F0 46 8D 16 -- 077AC0
83 00 4C 67 6A 9A 0A 76 FF 0C 76 FF 50 F0 46 8D -- 077AD0
00 E8 46 C7 00 00 1A C8 57 56 CB 5E 5F C9 08 C4 -- 077AE0
00 01 3D 05 8B 77 5A 3E C5 2E 00 00 E6 46 C7 00 -- 077AF0
06 3D 1B 74 00 05 3D 05 8B 77 5E 3E C5 2E 42 75 -- 077B00
3D 05 8B 77 62 3E C5 2E 2C 75 00 14 3D 16 74 00 -- 077B10
68 00 6A 00 6A 00 6A 1B 75 00 06 3D 05 74 00 05 -- 077B20
02 05 C7 0A 7E C5 08 C4 83 00 64 28 52 9A 50 E3 -- 077B30
05 74 00 0A 3D 05 8B 76 AE 3E C5 2E 05 34 E9 00 -- 077B40
B2 3E C5 2E 0A EB 00 00 FC 46 C7 07 75 00 02 3D -- 077B50
2B 00 00 05 C7 77 66 3E C5 2E FC 46 89 05 8B 76 -- 077B60
EA 46 C7 FA 46 89 EE 46 89 F8 46 89 F6 46 89 C0 -- 077B70
F4 46 89 F2 46 89 F0 46 89 EC 46 89 C0 2B 00 00 -- 077B80
0E 76 FF 10 76 FF 77 6A 36 FF 2E 77 6C 36 FF 2E -- 077B90
E9 FA 46 FF 06 75 C0 0B 08 C4 83 00 64 5A 20 9A -- 077BA0
FF 10 76 FF 77 6E 36 FF 2E 77 70 36 FF 2E 01 0A -- 077BB0
46 FF 06 75 C0 0B 08 C4 83 00 64 5A 20 9A 0E 76 -- 077BC0
76 FF 77 72 36 FF 2E 77 74 36 FF 2E 00 E8 E9 F8 -- 077BD0
06 75 C0 0B 08 C4 83 00 64 5A 20 9A 0E 76 FF 10 -- 077BE0
77 76 36 FF 2E 77 78 36 FF 2E 00 C6 E9 F6 46 FF -- 077BF0
08 C4 83 00 64 5A 20 9A 0E 76 FF 10 76 FF 01 FE -- 077C00
2E 77 7C 36 FF 2E 00 A4 E9 F4 46 FF 06 75 C0 0B -- 077C10
83 00 64 5A 20 9A 0E 76 FF 10 76 FF 77 7A 36 FF -- 077C20
80 36 FF 2E 00 82 E9 F2 46 FF 06 75 C0 0B 08 C4 -- 077C30
64 5A 20 9A 0E 76 FF 10 76 FF 77 7E 36 FF 2E 77 -- 077C40
36 FF 2E 61 EB F0 46 FF 05 75 C0 0B 08 C4 83 00 -- 077C50
5A 20 9A 0E 76 FF 10 76 FF 77 82 36 FF 2E 77 84 -- 077C60
FF 2E 40 EB EE 46 FF 05 75 C0 0B 08 C4 83 00 64 -- 077C70
20 9A 0E 76 FF 10 76 FF 77 86 36 FF 2E 77 88 36 -- 077C80
2E 1F EB EC 46 FF 05 75 C0 0B 08 C4 83 00 64 5A -- 077C90
9A 0E 76 FF 10 76 FF 77 8A 36 FF 2E 77 8C 36 FF -- 077CA0
C5 2E EA 46 FF 03 75 C0 0B 08 C4 83 00 64 5A 20 -- 077CB0
7E 83 FA 46 01 EA 46 8B 06 75 00 3D 83 77 8E 3E -- 077CC0
1C 74 00 EE 7E 83 10 75 00 F4 7E 83 16 75 00 EC -- 077CD0
C7 77 96 3E C5 2E 12 74 00 3D 83 77 92 3E C5 2E -- 077CE0
BE 3E C5 2E FF FF 05 C7 77 0A 3E C5 2E 00 00 05 -- 077CF0
```

```
EB  00  01  B8  05  74  00  FC  7E  83  06  74  00  3D  83  76  --  077D00
9A  3E  C5  2E  1C  74  00  FA  7E  83  E6  46  89  C0  2B  02  --  077D10
00  03  3D  05  8B  77  9E  3E  C5  2E  12  74  00  3D  83  77  --  077D20
7E  83  06  74  00  F8  7E  83  6C  75  00  E6  7E  83  06  75  --  077D30
54  75  00  E6  7E  83  06  74  00  F0  7E  83  60  75  00  E6  --  077D40
06  74  00  3D  83  77  9A  3E  C5  2E  10  74  00  EE  7E  83  --  077D50
9A  3E  C5  2E  10  74  00  F4  7E  83  3E  75  00  E6  7E  83  --  077D60
00  EC  7E  83  28  75  00  E6  7E  83  06  74  00  3D  83  77  --  077D70
7E  83  06  74  00  F2  7E  83  1C  75  00  FC  7E  83  06  74  --  077D80
83  77  8E  3E  C5  2E  47  74  00  EA  7E  83  10  75  00  E6  --  077D90

0B  74  00  F4  7E  83  06  75  00  EC  7E  83  3D  74  00  3D  --  077DA0
77  A2  3E  C5  2E  00  4C  6D  B8  9A  05  74  00  E6  7E  83  --  077DB0
9A  77  A6  36  FF  2E  77  A8  36  FF  2E  12  74  00  3D  83  --  077DC0
99  E9  00  01  05  C7  0A  7E  C5  04  C4  83  00  5C  97  1E  --  077DD0
5D  74  00  3D  83  76  BE  3E  C5  2E  00  4C  6E  D7  9A  02  --  077DE0
0C  74  00  3D  83  77  9A  3E  C5  2E  16  74  00  FA  7E  83  --  077DF0
7E  83  24  74  00  03  3D  05  8B  77  9E  3E  C5  2E  01  FE  --  077E00
12  75  00  EE  7E  83  18  75  00  F0  7E  83  1E  75  00  F8  --  077E10
00  EC  7E  83  06  75  00  F2  7E  83  0C  75  00  F4  7E  83  --  077E20
FF  E8  76  FF  9D  74  00  3D  83  76  E2  3E  C5  2E  1D  74  --  077E30
2E  8A  EB  06  C4  83  00  4C  6F  FD  9A  FC  76  FF  EC  76  --  077E40
EE  3E  C5  2E  00  8C  E9  03  74  00  3D  83  76  E2  3E  C5  --  077E50
FF  2E  77  B8  36  FF  2E  FF  70  E9  03  75  00  3D  83  76  --  077E60
36  FF  2E  77  B2  36  FF  2E  77  B4  36  FF  2E  77  B6  36  --  077E70
AA  36  FF  2E  77  AC  36  FF  2E  77  AE  36  FF  2E  77  B0  --  077E80
64  28  52  9A  50  0C  68  0B  6A  00  6A  00  6A  00  6A  77  --  077E90
FC  8E  E9  03  75  04  FE  7E  83  FE  46  89  1A  C4  83  00  --  077EA0
3E  C5  2E  1A  75  01  FE  7E  83  00  01  05  C7  0A  7E  C5  --  077EB0
2E  00  01  05  C7  76  E6  3E  C5  2E  07  AA  05  C7  76  EE  --  077EC0
00  00  05  C7  76  EE  3E  C5  2E  FF  05  E9  76  E2  3E  C5  --  077ED0
00  05  C7  76  E6  3E  C5  2E  FE  F4  E9  77  66  3E  C5  2E  --  077EE0
0F  74  00  3D  83  76  B6  3E  C5  2E  00  4C  1C  14  9A  00  --  077EF0
2E  00  01  05  C7  76  BA  3E  C5  2E  09  75  00  FC  7E  83  --  077F00
76  C8  36  FF  2E  66  6A  2B  74  00  3D  83  76  BE  3E  C5  --  077F10
9A  76  C2  36  FF  2E  76  C4  36  FF  2E  76  C6  36  FF  2E  --  077F20
76  BA  3E  C5  2E  09  74  C0  0B  0A  C4  83  00  54  3C  28  --  077F30
FF  2E  77  C6  36  FF  2E  77  C8  36  FF  2E  00  01  05  C7  --  077F40
36  FF  2E  77  C0  36  FF  2E  77  C2  36  FF  2E  77  C4  36  --  077F50
00  6A  00  6A  77  BA  36  FF  2E  77  BC  36  FF  2E  77  BE  --  077F60
89  1A  C4  83  00  64  28  52  9A  50  0C  68  0B  6A  00  6A  --  077F70
FE  49  E9  00  4C  C7  B7  9A  08  75  01  FE  7E  83  FE  46  --  077F80
00  DC  E9  03  74  02  FE  7E  83  00  02  05  C7  0A  7E  C5  --  077F90
C5  00  CD  E9  03  74  00  01  3D  05  8B  76  E2  3E  C5  2E  --  077FA0
E8  46  8D  16  0D  74  00  FC  7E  83  00  01  05  C7  0A  7E  --  077FB0
9A  E8  76  FF  FC  76  FF  04  C4  83  00  4C  70  A0  9A  50  --  077FC0
74  00  3D  83  77  A2  3E  C5  2E  04  C4  83  00  4C  6D  00  --  077FD0
00  5C  97  1E  9A  77  CA  36  FF  2E  77  CC  36  FF  2E  12  --  077FE0
EE  3E  C5  2E  00  01  05  C7  77  66  3E  C5  2E  04  C4  83  --  077FF0
00  F6  7E  83  00  4C  C7  B7  9A  00  00  05  C7  76  01  FE  --  078000
00  00  05  C7  76  E2  3E  C5  2E  00  4C  27  19  9A  18  74  --  078010
83  77  2A  3E  C5  2E  02  C4  83  00  4C  27  B3  9A  02  6A  --  078020
77  32  36  FF  2E  77  34  36  FF  2E  00  6A  27  74  00  3D  --  078030
83  00  5C  94  FB  9A  77  2E  36  FF  2E  77  30  36  FF  2E  --  078040
77  5E  3E  C5  2E  00  00  05  C7  77  2A  3E  C5  2E  0A  C4  --  078050
00  00  05  C7  77  96  3E  C5  2E  12  75  00  14  3D  05  8B  --  078060
5F  C9  00  4C  31  EC  9A  FF  FF  05  C7  77  0A  3E  C5  2E  --  078070
01  05  C7  76  E6  3E  C5  2E  00  00  24  C8  57  56  CB  5E  --  078080
76  EA  3E  C5  2E  02  C4  83  00  44  D1  01  9A  01  6A  00  --  078090
3E  C5  2E  04  C4  83  00  44  CE  0E  9A  35  FF  02  75  FF  --  0780A0
```

```
FF  2E  76  F8  36  FF  2E  24  6A  0E  74  00  3D  83  76  F2  --  0780B0
FA  36  FF  2E  76  FC  36  FF  2E  24  6A  0C  EB  76  F6  36  --  0780C0
FF  2E  0A  C4  83  00  5C  ED  6E  9A  50  DC  46  8D  16  76  --  0780D0
04  C4  83  00  5C  94  D5  9A  77  02  36  FF  2E  77  04  36  --  0780E0
04  9A  50  DC  46  8D  16  0A  76  FF  12  75  01  0C  7E  83  --  0780F0
71  24  9A  50  DC  46  8D  16  0D  EB  06  C4  83  00  4C  74  --  078100
C5  2E  00  00  05  C7  76  B6  3E  C5  2E  04  C4  83  00  4C  --  078110
44  C5  50  9A  00  00  02  45  C7  00  00  05  C7  77  42  3E  --  078120
00  00  02  C8  57  56  CB  5E  5F  C9  00  44  CF  28  9A  00  --  078130

6A  20  74  00  3D  83  77  2A  3E  C5  2E  00  00  FE  46  C7  --  078140
77  30  36  FF  2E  77  32  36  FF  2E  77  34  36  FF  2E  00  --  078150
2E  12  EB  0A  C4  83  00  5C  94  FB  9A  77  2E  36  FF  2E  --  078160
C4  83  00  5C  D3  78  9A  77  32  36  FF  2E  77  34  36  FF  --  078170
7E  83  04  C4  83  00  4C  70  A0  9A  50  FE  46  8D  16  04  --  078180
FF  2E  5C  75  00  3D  83  77  8E  3E  C5  2E  66  74  00  FE  --  078190
36  FF  2E  77  34  36  FF  2E  76  D2  36  FF  2E  76  D4  36  --  0781A0
C4  36  FF  2E  76  F6  36  FF  2E  76  F8  36  FF  2E  77  32  --  0781B0
C4  83  00  44  D2  AC  9A  FE  76  FF  76  C2  36  FF  2E  76  --  0781C0
36  FF  2E  76  F6  36  FF  2E  76  F8  36  FF  2E  24  6A  12  --  0781D0
2E  0A  C4  83  00  5C  ED  6E  9A  77  CE  36  FF  2E  77  D0  --  0781E0
83  77  8E  3E  C5  2E  5B  EB  00  01  05  C7  77  2A  3E  C5  --  0781F0
76  D2  36  FF  2E  76  D4  36  FF  2E  51  75  00  3D  01  FE  --  078200
2E  76  FC  36  FF  2E  77  32  36  FF  2E  77  34  36  FF  2E  --  078210
76  FF  76  C2  36  FF  2E  76  C4  36  FF  2E  76  FA  36  FF  --  078220
76  FC  36  FF  2E  24  6A  12  C4  83  00  44  D2  AC  9A  FE  --  078230
9A  77  CE  36  FF  2E  77  D0  36  FF  2E  76  FA  36  FF  2E  --  078240
00  08  C8  57  56  CB  5E  5F  C9  0A  C4  83  00  5C  ED  6E  --  078250
46  8D  16  76  CA  36  FF  2E  76  CC  36  FF  2E  08  6A  00  --  078260
2E  76  D4  36  FF  2E  0A  C4  83  00  5C  ED  6E  9A  50  F8  --  078270
C5  2E  76  CA  36  FF  2E  76  CC  36  FF  2E  76  D2  36  FF  --  078280
83  00  64  3D  BA  9A  01  31  68  03  6A  35  FF  76  CE  3E  --  078290
C5  2E  28  74  61  03  3D  05  8B  76  D2  3E  C5  2E  0E  C4  --  0782A0
00  3D  83  76  D6  3E  C5  2E  0A  75  00  3D  83  76  CA  3E  --  0782B0
DE  3E  C5  2E  3A  75  00  3D  83  76  DA  3E  C5  2E  14  74  --  0782C0
00  01  3D  05  8B  76  B6  3E  C5  2E  30  75  00  3D  83  76  --  0782D0
46  8D  16  08  6A  00  01  05  C7  76  E2  3E  C5  2E  4B  75  --  0782E0
5C  ED  6E  9A  76  CA  36  FF  2E  76  CC  36  FF  2E  50  F8  --  0782F0
14  74  00  3D  83  76  D2  3E  C5  2E  27  EB  0A  C4  83  00  --  078300
83  00  64  28  52  9A  35  FF  00  6A  00  6A  00  6A  00  6A  --  078310
3E  C5  2E  00  01  05  C7  76  E2  3E  C5  2E  59  EB  0A  C4  --  078320
05  8B  76  CA  3E  C5  2E  44  75  00  01  3D  05  8B  76  B6  --  078330
8B  76  DA  3E  C5  2E  05  89  F8  46  8B  05  7E  F8  46  3B  --  078340
76  D6  3E  C5  2E  05  89  FC  46  8B  05  7E  FC  46  3B  05  --  078350
DE  3E  C5  2E  05  89  FA  46  8B  05  7D  FA  46  3B  05  8B  --  078360
5E  5F  C9  05  89  FE  46  8B  05  7D  FE  46  3B  05  8B  76  --  078370
76  FF  0A  76  FF  00  4C  1C  FC  9A  EC  8B  55  57  56  CB  --  078380
3D  83  77  A2  3E  C5  2E  04  C4  83  00  4C  6D  00  9A  0E  --  078390
97  1E  9A  77  D2  36  FF  2E  77  D4  36  FF  2E  12  74  00  --  0783A0
C5  2E  00  01  05  C7  76  EE  3E  C5  2E  04  C4  83  00  5C  --  0783B0
2E  76  C8  36  FF  2E  66  6A  2B  74  00  3D  83  76  BE  3E  --  0783C0
28  9A  76  C2  36  FF  2E  76  C4  36  FF  2E  76  C6  36  FF  --  0783D0
C7  76  BA  3E  C5  2E  09  74  C0  0B  0A  C4  83  00  54  3C  --  0783E0
0A  7E  83  0F  74  00  3D  83  76  B6  3E  C5  2E  00  01  05  --  0783F0
C5  2E  00  01  05  C7  76  BA  3E  C5  2E  09  75  00  01  FE  --  078400
6D  B8  9A  05  74  00  0C  7E  83  00  00  05  C7  76  E2  3E  --  078410
77  9A  3E  C5  2E  EC  8B  55  57  56  CB  5E  5F  C9  00  4C  --  078420
2E  20  75  00  3D  83  77  8E  3E  C5  2E  2A  74  00  3D  83  --  078430
3D  83  76  F2  3E  C5  2E  16  75  00  3D  83  77  D6  3E  C5  --  078440
2E  00  01  05  C7  0A  7E  C5  00  4C  2C  06  9A  0C  74  00  --  078450
```

532

```
FF 2E 76 D4 36 FF 2E 3D 74 00 3D 83 77 8E 3E C5 -- 078460
CE 36 FF 2E 77 D0 36 FF 2E 00 6A 00 6A 76 D2 36 -- 078470
76 C4 36 FF 2E 77 32 36 FF 2E 77 34 36 FF 2E 77 -- 078480
C5 16 C4 83 00 44 D8 B4 9A 01 6A 76 C2 36 FF 2E -- 078490
00 00 02 C8 57 56 CB 5E 5F C9 00 01 05 C7 0A 7E -- 0784A0
36 FF 2E 77 DC 36 FF 2E 0A 76 FF 0C 76 FF 24 6A -- 0784B0
E4 36 FF 2E 12 6A 0A C4 83 00 5C ED 6E 9A 77 DA -- 0784C0
77 DE 36 FF 2E 77 E0 36 FF 2E 77 E2 36 FF 2E 77 -- 0784D0

77 EC 36 FF 2E 00 8A 68 0A C4 83 00 5C ED 6E 9A -- 0784E0
9A 77 E6 36 FF 2E 77 E8 36 FF 2E 77 EA 36 FF 2E -- 0784F0
74 00 3D 83 76 BE 3E C5 2E 0A C4 83 00 5C ED 6E -- 078500
FF 2E 77 F2 36 FF 2E 77 F4 36 FF 2E 00 8A 68 66 -- 078510
0A C4 83 00 5C ED 6E 9A 77 EE 36 FF 2E 77 F0 36 -- 078520
F8 36 FF 2E 77 FA 36 FF 2E 77 FC 36 FF 2E 24 6A -- 078530
66 6A 0A C4 83 00 5C ED 6E 9A 77 F6 36 FF 2E 77 -- 078540
2E 78 00 36 FF 2E 76 C6 36 FF 2E 76 C8 36 FF 2E -- 078550
BE 3E C5 2E 0A C4 83 00 5C ED 6E 9A 77 FE 36 FF -- 078560
00 12 45 C7 77 F6 3E C5 2E 0A EB 00 00 05 C7 76 -- 078570
36 FF 2E 76 CA 36 FF 2E 76 CC 36 FF 2E 08 6A 00 -- 078580
2E 0A C4 83 00 5C ED 6E 9A 78 02 36 FF 2E 78 04 -- 078590
2E 05 8B 76 B6 3E C5 2E 00 00 05 C7 78 06 3E C5 -- 0785A0
2E 00 00 05 C7 78 0E 3E C5 2E 05 89 78 0A 3E C5 -- 0785B0
05 89 78 12 3E C5 2E 02 55 8B 05 8B 77 42 3E C5 -- 0785C0
00 D1 E9 03 75 00 3D 83 78 16 3E C5 2E 02 55 89 -- 0785D0
3E C5 2E 00 C4 E9 03 75 00 3D 83 78 1A 3E C5 2E -- 0785E0
05 8B 78 26 3E C5 2E 40 75 00 01 3D 05 8B 78 1E -- 0785F0
C5 2E 00 00 FE 46 C7 05 89 78 22 3E C5 2E 01 FE -- 078600
03 78 2E 3E C5 2E 6D 7D 05 3B FE 46 8B 78 26 3E -- 078610
2E 78 2A 3E 03 2E E7 D1 FE 7E 8B E4 2A 05 8A F8 -- 078620
78 1E 3E C5 2E D3 EB FE 46 FF 05 89 78 2C 1E 8E -- 078630
C5 2E 05 8B 78 32 3E C5 2E 40 75 00 02 3D 05 8B -- 078640
8B 78 32 3E C5 2E 00 00 FE 46 C7 05 89 78 22 3E -- 078650
2A 05 8A F8 03 78 36 3E C5 2E 21 7D 05 3B FE 46 -- 078660
78 2C 1E 8E 2E 78 2A 3E 03 2E E7 D1 FE 7E 8B E4 -- 078670
FF 2E 78 40 36 FF 2E 12 6A D3 EB FE 46 FF 05 89 -- 078680
ED 6E 9A 78 3A 36 FF 2E 78 3C 36 FF 2E 78 3E 36 -- 078690
3E 3E C5 2E 05 8B 78 16 3E C5 2E 0A C4 83 00 5C -- 0786A0
3E C5 2E 68 74 00 3D 83 78 42 3E C5 2E 05 89 77 -- 0786B0
C5 2E 05 8B 78 4E 3E C5 2E 5E 74 00 3D 83 78 46 -- 0786C0
52 36 FF 2E 78 54 36 FF 2E 57 56 05 89 78 4A 3E -- 0786D0
78 4E 3E C5 2E 78 56 36 FF 2E 78 58 36 FF 2E 78 -- 0786E0
78 60 36 FF 2E 12 6A 5E 5F 00 5C FE EC 9A 35 FF -- 0786F0
9A 78 5A 36 FF 2E 78 5C 36 FF 2E 78 5E 36 FF 2E -- 078700
C5 2E 05 8B 78 42 3E C5 2E 0A C4 83 00 5C ED 6E -- 078710
2E 15 74 00 3D 83 77 9A 3E C5 2E 05 89 78 62 3E -- 078720
05 C7 78 6A 3E C5 2E 0B 74 00 3D 83 78 66 3E C5 -- 078730
06 14 68 00 00 05 C7 78 6A 3E C5 2E 09 EB 00 01 -- 078740
83 00 44 C6 8B 9A 77 E6 36 FF 2E 77 E8 36 FF 2E -- 078750
2E 04 00 68 15 74 00 3D 83 78 6A 3E C5 2E 06 C4 -- 078760
C4 83 00 44 C6 8B 9A 35 FF 02 75 FF 78 6E 3E C5 -- 078770
32 C8 57 56 CB 5E 5F C9 05 FF 77 1A 3E C5 2E 06 -- 078780
02 FA 46 C6 00 02 F8 46 C7 00 00 F6 46 C7 00 00 -- 078790
8D 16 00 00 FE 46 C7 00 00 FC 46 C7 00 FB 46 C6 -- 0787A0
46 8D 16 12 6A 04 C4 83 00 64 2A 68 9A 50 CE 46 -- 0787B0
C2 36 FF 2E 76 C4 36 FF 2E 50 CE 46 8D 16 50 F6 -- 0787C0
50 E4 46 8D 16 50 52 0C C4 83 00 5C 93 B5 9A 76 -- 0787D0
46 89 E6 56 8B E4 46 8B 0A C4 83 00 5C ED 6E 9A -- 0787E0
FF 2E 76 D2 36 FF 2E 76 D4 36 FF 2E E2 56 89 E0 -- 0787F0
2E 77 EC 36 FF 2E 76 FA 36 FF 2E 76 FC 36 01 FE -- 078800
```

```
C4 83 00 64 40 D0 9A 03 EC 68 06 6A 77 EA 36 FF -- 078810
EC 83 0E 76 FF 76 D2 36 FF 2E 76 D4 36 FF 2E 10 -- 078820
C4 8B 16 76 C2 36 FF 2E 76 C4 36 FF 2E 66 6A 66 -- 078830
FF 0C 76 FF 0A C4 83 00 5C ED 6E 9A 50 00 08 05 -- 078840
FF E2 76 FF 76 CA 36 FF 2E 76 CC 36 FF 2E 0A 76 -- 078850
9A 50 E4 46 8D 16 78 C4 83 00 5C A8 1E 9A E0 76 -- 078860
FF 2E 77 E8 36 FF 2E 57 56 04 C4 83 00 5C 94 D5 -- 078870

6A 5E 5F 00 8C 00 02 9A 06 14 68 00 6A 77 E6 36 -- 078880
DA 36 FF 2E 77 DC 36 FF 2E 0A 76 FF 0C 76 FF 24 -- 078890
50 CE 46 8D 16 12 6A 0A C4 83 00 5C ED 6E 9A 77 -- 0788A0
83 00 5C ED 6E 9A 77 DE 36 FF 2E 77 E0 36 FF 2E -- 0788B0
77 42 3E C5 2E 00 01 05 C7 78 0E 3E C5 2E 0A C4 -- 0788C0
2E 02 55 89 05 89 78 12 3E C5 2E 02 55 8B 05 8B -- 0788D0
C4 83 00 5C 94 D5 9A 77 02 36 FF 2E 77 04 36 FF -- 0788E0
00 64 2B D9 9A 77 E2 36 FF 2E 77 E4 36 FF 2E 04 -- 0788F0
77 E6 36 FF 2E 77 E8 36 FF 2E 06 14 68 04 C4 83 -- 078900
C9 05 FF 77 1A 3E C5 2E 06 C4 83 00 44 C6 8B 9A -- 078910
2E 0F 6A 02 6A 12 6A 00 00 34 C8 57 56 CB 5E 5F -- 078920
FF 2E 76 C4 36 FF 2E 78 72 36 FF 2E 78 74 36 FF -- 078930
46 8D 16 50 52 0C C4 83 00 5C 93 FD 9A 76 C2 36 -- 078940
16 74 00 FC 7E 83 0A C4 83 00 5C ED 6E 9A 50 EE -- 078950
00 64 28 52 9A FC 76 FF 00 6A 00 6A 00 6A 00 6A -- 078960
D4 36 FF 2E EA 46 89 F8 46 8B 00 BE E9 0A C4 83 -- 078970
EC 36 FF 2E 0A 76 FF 0C 76 FF 76 D2 36 FF 2E 76 -- 078980
00 64 40 D0 9A 03 EC 68 06 6A 77 EA 36 FF 2E 77 -- 078990
FF 2E 50 CC 46 8D 16 0A 76 FF 0C 76 FF 10 C4 83 -- 0789A0
0C C4 83 00 5C 32 95 9A 76 CA 36 FF 2E 76 CC 36 -- 0789B0
46 8D 16 0E 76 FF 76 D2 36 FF 2E 76 D4 36 FF 2E -- 0789C0
FF 0C 76 FF 76 CA 36 FF 2E 76 CC 36 FF 2E 50 CC -- 0789D0
DC 46 8D 16 78 76 36 FF 2E 78 78 36 FF 2E 0A 76 -- 0789E0
FF 2E 76 D4 36 FF 2E 1A C4 83 00 5C 2B C4 9A 50 -- 0789F0
3E C5 2E 04 C4 83 00 64 2A BB 9A 76 D2 36 01 FE -- 078A00
FF 00 6A 00 6A 00 6A 00 6A 12 74 00 3D 83 76 D2 -- 078A10
D5 9A 50 EE 46 8D 16 0A C4 83 00 64 28 52 9A 35 -- 078A20
A6 B6 00 6C 16 4C CB 5E 5F C9 04 C4 83 00 5C 94 -- 078A30
86 A2 00 3C A6 CC 00 3C A6 C4 00 3C A7 00 00 3C -- 078A40
A6 CA 00 3C F5 A4 00 3C A6 DE 00 3C 95 0E 00 3C -- 078A50
A6 E6 00 3C A6 E4 00 3C A6 E2 00 3C A6 E0 00 3C -- 078A60
98 DC 00 3C A6 C2 00 3C A7 EC 00 3C A6 C0 00 3C -- 078A70
A8 02 00 3C A5 4E 00 3C AE C6 00 3C 96 96 00 3C -- 078A80
A8 18 00 3C A8 2A 00 3C A6 BC 00 3C 86 A0 00 3C -- 078A90
A5 56 00 3C A6 B0 00 3C A6 C6 00 3C B3 28 00 3C -- 078AA0
22 F6 00 6C 16 82 00 6C 22 F4 00 3C A5 5C 00 3C -- 078AB0
A6 AC 00 3C AA 1C 00 3C 96 60 00 3C 96 5E 00 6C -- 078AC0
A7 02 00 3C A6 FE 00 6C 27 C4 00 3C A5 62 00 3C -- 078AD0
17 4E 00 6C 17 62 00 3C A6 B8 00 3C A7 04 00 3C -- 078AE0
A5 7B 00 3C A5 71 00 3C A5 69 00 3C A6 B2 00 6C -- 078AF0
A5 A6 00 3C A5 9B 00 3C A5 8D 00 3C A5 85 00 3C -- 078B00
A6 CE 00 6C 22 E8 00 3C A5 BC 00 3C A5 B2 00 3C -- 078B10
AE 5C 00 3C 96 CA 00 3C AE 54 00 3C A6 B4 00 3C -- 078B20
A6 04 00 3C A5 F3 00 3C A5 EA 00 3C A5 C4 00 3C -- 078B30
A6 30 00 3C A6 1F 00 3C A6 16 00 3C A6 05 00 3C -- 078B40
A6 75 00 6C 23 08 00 3C A6 42 00 3C A6 31 00 3C -- 078B50
A7 F0 00 3C A9 A4 00 3C A8 CA 00 6C 22 E6 00 3C -- 078B60
92 86 00 3C A8 EE 00 3C 90 36 00 3C A8 40 00 3C -- 078B70
A9 9C 00 3C A9 B6 00 3C 93 CA 00 3C A9 78 00 3C -- 078B80
AE 4E 00 3C AE 48 00 3C AE 4A 00 3C AE 4C 00 3C -- 078B90
AA 1E 00 24 77 8E 00 3C 91 14 00 3C 90 C2 00 3C -- 078BA0
B3 14 00 3C B4 2A 00 3C AA 20 00 3C B3 16 00 3C -- 078BB0
```

```
96 D0 00 3C 90 C6 00 3C AC 20 00 3C B3 2A 00 3C -- 078BC0
AC 36 00 3C 96 D8 00 3C AC 34 00 3C 96 D2 00 3C -- 078BD0
AC 32 00 3C 94 EA 00 3C AE 36 00 3C 9A A6 00 3C -- 078BE0
86 F6 00 6C 2B FA 00 3C AE 52 00 6C 2B F8 00 3C -- 078BF0
7E C5 00 01 02 C8 57 56 00 3C A7 06 00 3C 01 FE -- 078C00
FE FE 86 C7 11 74 00 80 0E 46 F7 00 00 05 C7 20 -- 078C10

FE 86 C7 06 EB 0E 46 89 FF 7F 25 0E 46 8B 00 01 -- 078C20
FF 50 FF 00 86 8D 16 20 76 FF 22 76 FF 00 00 FE -- 078C30
20 7E C5 0C C4 83 00 54 F7 DA 9A 0A 76 FF 0C 76 -- 078C40
16 10 76 FF 57 22 76 FF 00 BB E9 03 74 00 3D 83 -- 078C50
76 FF 16 76 FF 18 76 FF 1A 76 FF 50 FF 00 86 8D -- 078C60
74 00 3D 83 20 7E C5 12 C4 83 00 4C 79 89 9A 14 -- 078C70
C4 83 00 64 4E A1 9A 01 6A 00 AA 68 00 8F E9 03 -- 078C80
09 75 05 0B 02 45 8B 02 55 89 05 89 1C 7E C5 04 -- 078C90
FF 20 76 FF 22 76 FF 6A EB 10 6D 05 C7 20 7E C5 -- 078CA0
16 14 76 FF 16 76 FF 18 76 FF 1A 76 FF FE FE B6 -- 078CB0
0C 76 FF 35 FF 02 75 FF 1C 7E C5 50 FF 00 86 8D -- 078CC0
3D 83 20 7E C5 1A C4 83 00 4C 79 E7 9A 0A 76 FF -- 078CD0
02 75 FF 1C 7E C5 12 76 FF 57 22 76 FF 30 75 00 -- 078CE0
20 76 FF 22 76 FF 0A C4 83 00 4C 7A AA 9A 35 FF -- 078CF0
00 4C 7C 7A 9A 35 FF 02 75 FF 1C 7E C5 0E 76 FF -- 078D00
8B 0A 46 8B EC 8B 55 57 56 CB 5E 5F C9 0A C4 83 -- 078D10
7E C5 09 76 0E 46 3B 0E 7C 07 7F 10 56 3B 0C 56 -- 078D20
18 7E C5 09 79 00 0C 7E 83 3A EB 10 6F 05 C7 18 -- 078D30
3B 10 56 8B 0E 46 8B 12 7E C5 2B EB 10 70 05 C7 -- 078D40
05 C7 18 7E C5 09 72 4A 45 3B 0E 7C 07 7F 4C 55 -- 078D50
6C 05 C7 18 7E C5 07 75 01 16 7E 83 0D EB 10 71 -- 078D60
10 45 C6 0E 7E C5 EC 8B 55 57 56 CB 5E 5F C9 10 -- 078D70
89 05 89 0C 56 8B 0A 46 8B 0F 45 88 1E 46 8B 01 -- 078D80
46 8B 04 45 89 0E 7E C5 0E 45 8B 0A 7E C5 02 55 -- 078D90
4A 45 8B 12 7E C5 20 55 89 1E 45 89 18 56 8B 16 -- 078DA0
C5 00 DA 83 00 01 2D 1C 56 1B 1A 46 2B 4C 55 8B -- 078DB0
55 8B 46 45 8B 12 7E C5 24 55 89 22 45 89 0E 7E -- 078DC0
20 76 FF 22 76 FF 14 55 89 12 45 89 0E 7E C5 48 -- 078DD0
8A 50 E4 2A 11 45 8A 50 E4 2A 10 45 8A 12 7E C5 -- 078DE0
00 54 FE 87 9A 4A 75 FF 4C 75 FF 50 E4 2A 0D 45 -- 078DF0
7E C5 28 55 89 26 45 89 0E 7E C5 0E C4 83 01 FE -- 078E00
C5 0A 75 00 13 7D 80 12 7E C5 20 75 00 3D 83 20 -- 078E10
00 1A 45 C7 0E 7E C5 08 EB 30 00 1A 45 C7 0E 7E -- 078E20
00 00 1E C8 57 56 CB 5E 5F C9 00 00 1C 45 C7 80 -- 078E30
9B F4 56 89 F2 46 89 28 55 8B 26 45 8B 0A 7E C5 -- 078E40
52 24 55 1B 22 45 2B EA 5E DD 9B 8E 12 06 DF 2E -- 078E50
ED 99 9A EA 76 DC 9B 04 C4 83 00 5C ED C3 9A 50 -- 078E60
9A 00 5C ED 99 9A 08 C4 83 00 64 59 06 9A 00 5C -- 078E70
74 01 0E 7E 83 FE 46 89 40 08 C4 83 00 5C ED F9 -- 078E80
46 C7 05 EB 80 00 F8 46 C7 07 75 02 0E 7E 83 06 -- 078E90
3B FE 46 8B FC 46 89 09 E8 C1 F8 46 8B F0 00 F8 -- 078EA0
7E 83 01 47 E9 00 0A 05 C7 10 7E C5 0A 7E FC 46 -- 078EB0
46 8D 16 01 32 E9 09 E0 C1 FE 46 8B 09 75 02 0E -- 078EC0
C4 83 00 5C EF 7A 9A 50 52 D2 2B F8 46 8B 50 F2 -- 078ED0
2E 9B E2 5E DD 9B 8E 12 06 DF 2E 9B FA 46 89 08 -- 078EE0
FA 46 8B 50 F2 46 8D 16 EA 5E DD 9B 8E 12 06 DF -- 078EF0
D1 00 09 B9 08 C4 83 00 5C EE E8 9A 50 52 D2 2B -- 078F00
9A 04 C4 83 00 5C ED CB 9A 50 52 FA E2 D8 D1 EA -- 078F10
EA 4E DC 9B 08 C4 83 00 64 59 06 9A 00 5C ED 99 -- 078F20
C4 83 00 5C EE 14 9A 00 5C ED 99 9A E2 46 DC 9B -- 078F30
06 DF 2E 9B FA 4E FF 63 76 F8 46 3B F6 46 89 08 -- 078F40
EA 5E DD 9B 8E 12 06 DF 2E 9B E2 5E DD 9B 8E 12 -- 078F50
5C EE E8 9A 50 52 D2 2B FA 46 8B 50 F2 46 8D 16 -- 078F60
```

535

```
9A 50 52 FA E2 D8 D1 EA D1 00 09 B9 08 C4 83 00 -- 078F70
64 59 06 9A 00 5C ED 99 9A 04 C4 83 00 5C ED CB -- 078F80
5C ED 99 9A E2 46 DC 9B EA 4E DC 9B 08 C4 83 00 -- 078F90
83 FA 7E 8B F6 46 89 08 C4 83 00 5C EE 14 9A 00 -- 078FA0
FA 46 8B 50 F2 46 8D 16 50 52 D2 2B C7 8B FF C7 -- 078FB0

F0 56 89 EE 46 89 08 C4 83 00 5C EE E8 9A 50 52 -- 078FC0
EF 84 9A 50 52 F0 56 1B EE 46 2B D2 2B F6 46 8B -- 078FD0
D3 E9 03 76 00 F9 83 CA 8B D8 8B 08 C4 83 00 5C -- 078FE0
C5 F6 46 8B FE C8 E9 03 76 0C 1C FB 81 09 72 FE -- 078FF0
0A C8 57 56 CB 5E 5F C9 9B 06 45 89 0A 7E 01 FE -- 079000
46 8B 0C 76 FF 11 45 88 0A 7E C5 0E 46 8B 00 00 -- 079010
56 89 F6 46 89 24 55 8B 22 45 8B 50 00 26 05 0A -- 079020
54 13 26 1E 44 03 26 D2 2B 06 45 8B 0A 76 C4 F8 -- 079030
C4 83 00 5C EF 7A 9A 50 52 F8 56 13 F6 46 03 20 -- 079040
7E 0E 46 3B FC 46 8B 00 00 FC 46 C7 FA 46 89 08 -- 079050
00 90 E9 03 75 00 0F 7D 80 0A 7E C5 00 90 E9 03 -- 079060
FF 06 75 FF 0A 7E C5 57 56 00 8E E9 01 6A 02 6A -- 079070
6B FE 46 89 5E 5F 00 5C BF B8 9A 10 76 FF 12 76 -- 079080
7E C5 3E 45 89 0C 5E 8E 0A 7E 03 FA 8B 28 FC 56 -- 079090
64 5D 04 9A FE 76 FF 00 84 E9 03 74 00 3D 83 10 -- 0790A0
0C 5E 8E 0A 7E 03 FB 8B 28 FC 5E 6B 02 C4 83 00 -- 0790B0
10 76 FF 12 76 FF 00 6A 57 56 34 55 89 32 45 89 -- 0790C0
0A 7E 03 FA 8B 28 FC 56 6B 5E 5F 00 5C BF 98 9A -- 0790D0
46 FF 3F 75 00 3D 83 10 7E C5 40 45 89 0C 5E 8E -- 0790E0
2D EB 0D 45 88 0A 7E C5 40 0E 46 8B FF 65 E9 FC -- 0790F0
FC 5E 6B 04 C4 83 00 64 4E A1 9A 02 6A FA 76 FF -- 079100
0B 44 55 89 42 45 89 0C 5E 8E 0A 7E 03 FB 8B 28 -- 079110
5E 5F C9 10 6D 05 C7 10 7E C5 FF 51 E9 03 74 C2 -- 079120
7E 83 00 00 05 C7 14 7E C5 00 00 0A C8 57 56 CB -- 079130
7D 80 0A 7E C5 01 4C E9 10 6E 05 C7 07 74 00 12 -- 079140
45 8A 0A 7E C5 00 10 45 C6 01 19 E9 03 75 00 10 -- 079150
46 3B F6 46 8B 00 00 F6 46 C7 F8 46 89 E4 2A 11 -- 079160
C6 0C 5E 8E 0A 7E 03 F8 8B 28 F6 46 6B 22 7F F8 -- 079170
00 58 45 C6 0A 7E 03 F8 8B 28 F6 46 6B 00 57 45 -- 079180
46 C7 59 45 88 0A 7E C5 F8 46 8B D6 EB F6 46 FF -- 079190
8B 28 F6 46 6B 18 7F F8 46 3B F6 46 8B 00 01 F6 -- 0791A0
46 FF 59 45 88 48 F6 46 8B 0C 5E 8E 0A 7E 03 F8 -- 0791B0
89 2A 45 89 0A 7E C5 10 56 8B 0E 46 8B E0 EB F6 -- 0791C0
00 16 45 C7 01 0C 45 C6 30 55 89 2E 45 89 2C 55 -- 0791D0
FF 00 00 FE 46 C7 00 0E 45 C6 00 00 18 45 C7 00 -- 0791E0
4C 7F D2 9A 57 0C 76 FF FE 76 FF 14 76 FF 16 76 -- 0791F0
88 E9 03 74 00 3D 83 14 7E C5 0A C4 83 00 01 FE -- 079200
2A 0D 45 8A 0A 7E C5 FE 46 FF 00 00 FC 46 C7 00 -- 079210
8B 0A 76 C4 6D 75 00 FC 7E 83 73 74 FE 46 3B E4 -- 079220
44 3B 26 2E 7F 08 7C 14 54 3B 26 30 55 8B 2E 45 -- 079230
FF 16 76 FF 1F 78 00 30 7D 83 0A 7E C5 28 73 12 -- 079240
C4 83 00 4C 7F D2 9A 57 0C 76 FF FE 76 FF 14 76 -- 079250
00 01 FC 46 C7 2E EB AD 74 00 3D 83 14 7E C5 0A -- 079260
0C 76 FF 14 76 FF 16 76 FF 00 00 FA 46 C7 A4 EB -- 079270
7E C5 0A C4 83 00 4C 8B 81 9A FA 76 FF 0A 76 FF -- 079280
C8 57 56 CB 5E 5F C9 FE C4 E9 03 75 00 3D 83 14 -- 079290
0E 46 6B 02 6A 04 75 FF 0A 7E C5 57 56 00 00 02 -- 0792A0
28 0E 46 6B 4E 75 FF 50 75 FF 0A 7E 03 F8 8B 28 -- 0792B0
DA 9A 10 76 FF 12 76 FF 40 75 FF 0A 7E 03 F8 8B -- 0792C0
00 82 E9 03 74 00 3D 83 10 7E C5 5E 5F 00 5C C1 -- 0792D0
7E 03 F8 8B 28 0E 46 6B 04 75 FF 0A 7E C5 57 56 -- 0792E0
5C C1 FA 9A 10 76 FF 12 76 FF FF 6A 40 75 FF 0A -- 0792F0
57 56 54 75 00 3D 83 10 7E C5 FE 46 89 5E 5F 00 -- 079300
FF 0A 7E 03 F8 8B 28 0E 46 6B 04 75 FF 0A 7E C5 -- 079310
```

536

```
75 FF 0A 7E 03 F8 8B 28 0E 46 6B 32 75 FF 34 75 -- 079320
12 76 FF 40 75 FF 0A 7E 03 F8 8B 28 0E 46 6B 3C -- 079330
00 3D 83 10 7E C5 5E 5F 00 5C C2 1A 9A 10 76 FF -- 079340
45 C6 0C 5E 8E 0A 7E 03 F8 8B 28 0E 46 6B 10 75 -- 079350

C7 10 7E C5 00 00 0E C8 57 56 CB 5E 5F C9 01 57 -- 079360
76 FF 0C 76 FF 0E 76 FF 50 FE 46 8D 16 00 00 05 -- 079370
FF FC 56 89 FA 46 89 0A C4 83 00 4C 86 77 9A 0A -- 079380
88 93 9A 0A 76 FF 0C 76 FF 0E 76 FF 50 52 FE 76 -- 079390
76 FF 0C 76 FF 0E 76 FF F6 46 89 0C C4 83 00 4C -- 0793A0
03 F8 8B 28 0E 46 6B 06 C4 83 00 4C 84 DB 9A 0A -- 0793B0
0A 7E 8B 57 56 31 75 01 57 7D 80 0C 5E 8E 0A 7E -- 0793C0
6A 40 75 FF 0A 7E 03 F8 8B 28 0E 46 6B 04 75 FF -- 0793D0
46 89 5E 5F 00 5C C1 FA 9A 10 76 FF 12 76 FF FF -- 0793E0
7E C5 57 56 00 D5 E9 03 74 00 3D 83 10 7E C5 F8 -- 0793F0
46 6B FA 76 FF FC 76 FF 02 6A 04 75 FF 0A 01 FE -- 079400
10 76 FF 12 76 FF 40 75 FF 0A 7E 03 F8 8B 28 0E -- 079410
E9 03 74 00 3D 83 10 7E C5 5E 5F 00 5C C1 DA 9A -- 079420
F8 8B 28 0E 46 6B 04 75 FF 0A 7E C5 57 56 00 A1 -- 079430
FA 9A 10 76 FF 12 76 FF FF 6A 40 75 FF 0A 7E 03 -- 079440
73 75 00 3D 83 10 7E C5 F8 46 89 5E 5F 00 5C C1 -- 079450
8E 0A 7E 03 F8 8B 28 0E 46 6B 17 74 00 FE 7E 83 -- 079460
0E 46 6B 12 EB 02 00 05 34 55 8B 32 45 8B 0C 5E -- 079470
89 34 55 8B 32 45 8B 0C 5E 8E 0A 7E 03 F8 8B 28 -- 079480
FF 50 52 04 75 FF 0A 7E C5 57 56 F4 56 89 F2 46 -- 079490
76 FF 40 75 FF 0A 7E 03 F8 8B 28 0E 46 6B F6 76 -- 0794A0
3D 83 10 7E C5 5E 5F 00 5C C1 BA 9A 10 76 FF 12 -- 0794B0
C6 0C 5E 8E 0A 7E 03 F8 8B 28 0E 46 6B 10 75 00 -- 0794C0
0A 76 C5 00 00 0A C8 57 56 CB 5E 5F C9 01 57 45 -- 0794D0
45 8A FE 03 F8 8B 28 C7 6B F8 8B E4 2A 0E 44 8A -- 0794E0
7D 80 FE 03 F8 8B 28 FE 46 6B FE 46 89 E4 2A 59 -- 0794F0
8A FE 03 F8 8B 28 FE 46 6B 00 AC E9 03 75 00 58 -- 079500
8B FE 03 F8 8B 28 FC 46 6B FC 46 89 E4 2A 59 45 -- 079510
46 8B 0C 76 FF F8 56 89 F6 46 89 54 55 8B 52 45 -- 079520
46 8E 0A 76 03 F0 8B 28 FC 46 6B 50 00 26 05 0A -- 079530
4C 55 8B 4A 45 8B 0A 7E 03 F8 8B 28 FC 46 6B 0C -- 079540
50 52 00 D2 83 00 01 05 48 54 1B 26 46 44 2B 26 -- 079550
FF 25 F8 56 1B F6 46 2B 08 C4 83 00 5C EE E8 9A -- 079560
7E 03 F8 8B 28 FE 46 6B 57 56 FA 46 89 D2 2B 01 -- 079570
F8 8B 28 FC 46 6B 32 75 FF 34 75 FF 0C 5E 8E 0A -- 079580
5C FE EC 9A FA 76 FF 38 75 FF 3A 75 FF 0A 7E 03 -- 079590
C6 0C 5E 8E 0A 7E 03 F8 8B 28 FE 46 6B 5E 5F 00 -- 0795A0
FF 0C 76 FF FE 76 FF 0E 76 FF 10 76 FF 00 58 45 -- 0795B0
00 3D 83 0E 7E C5 0A C4 83 00 4C 7F 09 9A 0A 76 -- 0795C0
3B 26 30 55 8B 2E 45 8B 0A 7E C5 0A 76 C4 60 75 -- 0795D0
83 0A 7E C5 46 73 12 44 3B 26 4C 7F 08 7C 14 54 -- 0795E0
8B 28 FE 46 6B 30 75 00 0C 7D 80 3D 78 00 30 7D -- 0795F0
76 FF FC 46 89 E4 2A 59 45 8A 0A 7E 03 F8 01 FE -- 079600
00 4C 7F D2 9A 0A 76 FF 0C 76 FF 50 0E 76 FF 10 -- 079610
0A 7E C5 07 EB 09 74 00 3D 83 0E 7E C5 0A C4 83 -- 079620
7E C5 00 00 0C C8 57 56 CB 5E 5F C9 00 0C 45 C6 -- 079630
FE 46 89 E4 2A 0E 45 8A 0A 7E C5 00 00 05 C7 20 -- 079640
7C 14 55 3B F8 56 89 F6 46 89 2C 55 8B 2A 45 8B -- 079650
7E C5 0A 79 00 F8 7E 83 06 73 12 45 3B 0B 7F 07 -- 079660
7E 03 FB 8B 28 FE 5E 6B 01 F7 E9 10 72 05 C7 20 -- 079670
7D 0D 7F 4C 55 3B F8 56 8B F6 46 8B 0C 5E 8E 0A -- 079680
00 1E 7E 83 00 AF E9 03 77 4A 45 3B 00 B7 E9 03 -- 079690
76 FF FE 76 FF 20 76 FF 22 76 FF 00 83 E9 03 75 -- 0796A0
83 20 7E C5 0A C4 83 00 4C 7F 09 9A 0A 76 FF 0C -- 0796B0
2E 45 8B 0A 7E C5 0A 76 C4 01 A8 E9 03 74 00 3D -- 0796C0
```

537

```
73 12 44 3B 26 4D 7F 08 7C 14 54 3B 26 30 55 8B -- 0796D0
31 75 00 0C 7D 80 3E 78 00 30 7D 83 0A 7E C5 47 -- 0796E0
46 89 E4 2A 59 45 8A 0A 7E 03 F8 8B 28 FE 46 6B -- 0796F0

D2 9A 0A 76 FF 0C 76 FF 50 20 76 FF 22 76 FF FC -- 079700
4E E9 0A 74 00 3D 83 20 7E C5 0A C4 83 00 4C 7F -- 079710
E4 2A 0D 45 8A 0A 7E C5 00 0C 45 C6 0A 7E C5 01 -- 079720
C2 8B F4 76 F7 D2 2B 40 E4 2A 0E 45 8A F4 46 89 -- 079730
8B 28 FE 46 6B FE 46 89 E4 2A 0E 45 8A 0E 45 88 -- 079740
0E 7E C5 34 55 8B 32 45 8B 0C 5E 8E 0A 7E 03 F8 -- 079750
5E 8E 0A 7E 03 F8 8B 28 FE 46 6B 02 55 89 05 89 -- 079760
0A 7E 8B 00 D2 83 00 01 05 4C 55 8B 4A 45 8B 0C -- 079770
46 6B 02 55 89 05 89 1A 7E C5 2C 55 89 2A 45 89 -- 079780
12 7E C5 36 45 8B 0C 5E 8E 0A 7E 03 F8 8B 28 FE -- 079790
45 8B 0C 5E 8E 0A 7E 03 F8 8B 28 FE 46 6B 05 89 -- 0797A0
28 FE 46 6B 02 55 89 05 89 16 7E C5 44 55 8B 42 -- 0797B0
57 56 3E 75 01 57 7D 80 0C 5E 8E 0A 7E 03 F8 8B -- 0797C0
FF 0A 7E 03 F8 8B 28 FE 46 6B 04 75 FF 0A 7E 8B -- 0797D0
5F 00 5C C1 FA 9A 20 76 FF 22 76 FF FF 6A 40 75 -- 0797E0
28 FE 46 6B 73 75 00 3D 83 20 7E C5 FA 46 89 5E -- 0797F0
46 6B 00 57 45 C6 0C 5E 8E 0A 7E 03 F8 8B 01 FE -- 079800
51 74 00 58 7D 80 0C 5E 8E 0A 7E 03 F8 8B 28 FE -- 079810
46 89 E4 2A 59 45 8A 0A 7E 03 F8 8B 28 FE 46 6B -- 079820
FF 34 75 FF 0A 7E 03 F8 8B 28 FE 46 6B 57 56 FC -- 079830
75 FF 3A 75 FF 0A 7E 03 F8 8B 28 FC 46 6B 32 75 -- 079840
74 00 1E 7E 83 5E 5F 00 5C FE EC 9A 02 00 68 38 -- 079850
58 45 C6 0C 5E 8E 0A 7E 03 F8 8B 28 FE 46 6B 10 -- 079860
45 8B 0A 7E C5 00 00 26 C8 57 56 CB 5E 5F C9 00 -- 079870
F8 8B 28 0E 46 6B FE 56 89 FC 46 89 28 55 8B 26 -- 079880
89 FA 56 89 F8 46 89 48 55 8B 46 45 8B 0A 7E 03 -- 079890
7D 80 0A 7E 03 F8 8B 28 0E 46 6B F2 56 89 F0 46 -- 0798A0
28 0E 46 6B 00 F2 56 83 01 F0 46 83 08 75 00 56 -- 0798B0
46 89 4C 55 8B 4A 45 8B 0C 5E 8E 0A 7E 03 F8 8B -- 0798C0
EC 46 89 30 55 8B 2E 45 8B 0A 7E 8B F6 56 89 F4 -- 0798D0
05 EE 56 1B EC 46 2B F6 56 8B F4 46 8B EE 56 89 -- 0798E0
7E 03 F8 8B 28 0E 46 6B E0 46 89 00 D2 83 00 01 -- 0798F0
0A 7E 03 F8 8B 28 0E 46 6B 36 45 89 E0 46 8B 0A -- 079900
8A 0A 7E 8B EA 56 89 E8 46 89 44 55 8B 42 45 8B -- 079910
0A 7E 03 F8 8B 28 0E 46 6B E6 46 89 E4 2A 0F 45 -- 079920
00 E6 7E 83 E4 56 89 E2 46 89 54 55 8B 52 45 8B -- 079930
56 89 DA 46 89 20 55 8B 1E 45 8B 0A 7E 8B 42 74 -- 079940
56 8B EC 46 8B 50 00 26 05 0A 46 8B 0C 76 FF DC -- 079950
C4 83 00 5C EE E8 9A 50 52 FA 56 1B F8 46 2B EE -- 079960
E8 7E C5 DC 56 13 DA 46 03 E4 56 1B E2 46 2B 08 -- 079970
DA 46 89 20 55 8B 1E 45 8B 0A 7E C5 74 EB 05 89 -- 079980
EC 46 8B 50 00 26 05 0A 46 8B 0C 76 FF DC 56 89 -- 079990
00 5C EE E8 9A 50 52 FA 56 1B F8 46 2B EE 56 8B -- 0799A0
C5 DC 56 13 DA 46 03 E4 56 1B E2 46 2B 08 C4 83 -- 0799B0
73 E0 46 3B DE 46 8B 00 01 DE 46 C7 05 89 E8 7E -- 0799C0
8B EA 5E 8E E8 7E 03 E7 D1 FF C7 83 DE 7E 8B 27 -- 0799D0
7E 03 E7 D1 DE 7E 8B FE 56 13 FC 46 03 D2 2B 05 -- 0799E0
01 05 F6 56 8B F4 46 8B D1 EB DE 46 FF 05 89 E8 -- 0799F0
C9 30 55 89 2E 45 89 0A 7E C5 00 D2 83 00 01 FE -- 079A00
8B 1A 45 8B 0A 7E C5 00 00 1A C8 57 56 CB 5E 5F -- 079A10
46 89 20 55 8B 1E 45 8B E8 56 89 E6 46 89 1C 55 -- 079A20
75 FF 50 00 2E 05 0A 46 8B 0C 76 FF EC 56 89 EA -- 079A30
13 EA 46 03 08 C4 83 00 5C EE E8 9A 26 75 FF 28 -- 079A40
00 6A FA 56 89 F8 46 89 E8 56 13 E6 46 03 EC 56 -- 079A50
00 09 B9 08 C4 83 00 5C EF 6E 9A 50 52 02 00 68 -- 079A60
8B 0A 7E C5 FE 56 89 FC 46 89 FA E2 D2 D1 E0 D1 -- 079A70
```

```
55 1B 1E 45 2B FE 56 1B FC 46 2B FA 56 8B F8 46 -- 079A80
83 31 75 08 78 00 F6 7E 83 F6 56 89 F4 46 89 20 -- 079A90

5E 8E 0A 7E 03 F8 8B 28 0E 46 6B 2B 75 00 F4 7E -- 079AA0
45 89 00 DA 83 D8 F7 DA F7 F6 56 8B F4 46 8B 0C -- 079AB0
00 92 E9 30 55 8B 2E 45 8B 0A 7E 8B 54 55 89 52 -- 079AC0
F4 76 FF F6 76 FF 50 00 26 05 0A 46 8B 0C 76 FF -- 079AD0
46 8B 0C 76 FF F2 46 89 08 C4 83 00 5C EF 7A 9A -- 079AE0
00 5C EF C6 9A F4 76 FF F6 76 FF 50 00 26 05 0A -- 079AF0
28 0E 46 6B 18 75 00 F0 7E 83 F0 46 89 08 C4 83 -- 079B00
54 45 C7 00 00 52 45 C7 0C 5E 8E 0A 7E 03 F8 8B -- 079B10
0A 7E C5 CA 8B D8 8B D2 2B F0 46 8B 28 EB 00 00 -- 079B20
FB 8B 28 0E 5E 6B D1 1B C3 2B 28 55 8B 26 45 8B -- 079B30
2B F2 46 8B F2 46 FF 54 55 89 52 45 89 0A 7E 03 -- 079B40
C3 2B 30 55 8B 2E 45 8B 0A 7E C5 CA 8B D8 8B D2 -- 079B50
55 89 46 45 89 0A 7E 03 FB 8B 28 0E 5E 6B D1 1B -- 079B60
7F 07 7C 18 55 3B FE 56 8B FC 46 8B 0A 7E C5 48 -- 079B70
89 18 55. 8B 16 45 8B 0A 7E C5 44 73 16 45 3B 49 -- 079B80
45 8A 0A 7E 03 F8 8B 28 0E 46 6B FE 56 89 FC 46 -- 079B90
81 0A 7E 03 F8 8B 28 EE 46 6B EE 46 89 E4 2A 59 -- 079BA0
58 45 C6 0A 7E 03 F8 8B 28 0E 46 6B 02 00 3C 6D -- 079BB0
00 05 C7 10 7E C5 17 EB 00 01 05 C7 10 7E C5 01 -- 079BC0
58 45 C6 0C 5E 8E 0A 7E 03 F8 8B 28 0E 46 6B 00 -- 079BD0
8B 0C 5E 8E FE 03 F8 8B 28 0E 46 6B 0A 76 C4 00 -- 079BE0
44 3B 26 18 7C 08 7F 20 54 3B 26 54 55 8B 52 45 -- 079BF0
5E 8E 0A 7E 03 F8 8B 28 0E 46 6B 12 76 1E 01 FE -- 079C00
0A 7E 03 F8 8B 28 0E 46 6B 10 EB 00 56 45 C6 0C -- 079C10
5E 5F C9 FE 56 8B FC 46 8B 01 56 45 C6 0C 5E 8E -- 079C20
0A 7E 03 F8 8B 28 0E 46 6B 00 00 1A C8 57 56 CB -- 079C30
6B FC 56 89 FA 46 89 48 55 8B 46 45 8B 0C 5E 8E -- 079C40
45 8B 0A 7E 8B 0C 46 8E 0A 76 03 F0 8B 28 0E 46 -- 079C50
56 89 F6 46 89 54 54 13 26 52 44 03 26 D2 2B 06 -- 079C60
03 77 26 45 3B 00 C3 E9 03 73 0D 77 28 55 3B F8 -- 079C70
F8 76 FF 50 00 26 05 0A 46 8B 0C 76 FF 00 BB E9 -- 079C80
56 13 FA 46 03 08 C4 83 00 5C EF 7A 9A F6 76 FF -- 079C90
0C 76 FF FC 56 89 FA 46 89 00 DA 83 00 01 2D FC -- 079CA0
EF C6 9A F6 76 FF F8 76 FF 50 00 26 05 0A 46 8B -- 079CB0
45 8B 0A 7E C5 0A 76 C4 F4 46 89 08 C4 83 00 5C -- 079CC0
89 EE 46 89 24 54 1B 26 22 44 2B 26 28 55 8B 26 -- 079CD0
46 3B 36 72 07 77 F0 56 3B D2 2B F4 46 8B F0 56 -- 079CE0
45 8B 0A 7E C5 00 FC 56 83 01 FA 46 83 31 72 EE -- 079CF0
0A 76 8B 0A 5E C4 F0 56 89 EE 46 89 24 55 8B 22 -- 079D00
13 26 26 47 03 26 D2 2B C7 8B F4 7E 2B 06 7C 8B -- 079D10
F4 7E 2B 06 7C 8B 0A 76 C5 0A 5E C4 42 EB 28 57 -- 079D20
7E C5 2E EB 24 57 1B 26 22 47 2B 26 D2 2B C7 8B -- 079D30
0E 46 6B F0 56 89 EE 46 89 24 55 8B 22 45 8B 0A -- 079D40
2B 26 28 55 8B 26 45 8B 0C 46 8E F7 03 F0 8B 28 -- 079D50
C5 FE 46 89 F0 56 1B EE 46 2B 54 54 1B 26 52 44 -- 079D60
E9 03 7D 0D 7F 14 55 3B FC 56 8B FA 46 8B 0A 7E -- 079D70
12 45 8B 0A 7E C5 00 80 E9 03 73 12 45 3B 00 88 -- 079D80
8B FC 56 89 FA 46 89 00 DA 83 00 01 2D 14 55 8B -- 079D90
55 8B 26 45 8B E8 56 89 E6 46 89 24 55 8B 22 45 -- 079DA0
0A 7E 03 F8 8B 28 0E 46 6B EC 56 89 EA 46 89 28 -- 079DB0
8B 0C 76 FF F0 56 89 EE 46 89 54 55 8B 52 45 8B -- 079DC0
8B 0A 7E 03 F8 8B 28 0E 46 6B 50 00 26 05 0A 46 -- 079DD0
EE E8 9A 50 52 48 55 1B 46 45 2B FC 56 8B FA 46 -- 079DE0
56 13 EA 46 03 F0 56 1B EE 46 2B 08 C4 83 00 5C -- 079DF0
28 0E 46 6B FE 46 89 E8 56 1B E6 46 2B EC 01 FE -- 079E00
45 89 FC 56 8B FA 46 8B 0C 5E 8E 0A 7E 03 F8 8B -- 079E10
00 01 F2 46 C7 07 74 01 FF FE 46 F7 4C 55 89 4A -- 079E20
```

539

```
A3 40 36 FF 2E A3 42 36 FF 2E 0E 76 FF 10 76 FF -- 07A930
00 DA 83 00 01 2D 02 55 8B 05 8B A2 DC 3E C5 2E -- 07A940
02 55 89 05 89 A3 3C 3E C5 2E D0 8B C0 2B 50 52 -- 07A950
8D 16 50 E4 2A F5 46 8A 50 E4 2A F7 46 8A 50 52 -- 07A960
2E 50 E4 2A FB 46 8A 50 E4 2A F9 46 8A 50 CE 46 -- 07A970
C4 83 00 2C 6F 1C 9A 35 FF 02 75 FF A3 00 3E C5 -- 07A980
00 2C D0 F8 9A 35 FF 0D 74 00 3D 83 0E 7E C5 20 -- 07A990
2A F3 46 8A 0E 76 FF 10 76 FF 02 FA E9 02 C4 83 -- 07A9A0
99 05 8B A2 EC 3E C5 2E 50 E4 2A FF 46 8A 50 E4 -- 07A9B0
C3 2B 02 55 8B 05 8B A3 10 3E C5 2E CA 8B D8 8B -- 07A9C0
D7 9A 35 FF 02 75 FF A3 40 3E C5 2E 50 52 D1 1B -- 07A9D0
46 C7 AB 75 00 3D 83 0E 7E C5 10 C4 83 00 2C 79 -- 07A9E0
D6 46 89 02 55 8B 05 8B A3 10 3E C5 2E 00 00 E8 -- 07A9F0
D8 56 8B D6 46 8B A3 18 3E C5 2E D8 56 89 01 FE -- 07AA00
3A E9 03 76 05 3B 02 41 E9 03 7E 0C 7C 02 55 3B -- 07AA10
46 8D 16 0E 76 FF 10 76 FF 37 75 00 E8 7E 83 02 -- 07AA20
EE 46 8D 16 50 E8 46 8D 16 50 EA 46 8D 16 50 D2 -- 07AA30
00 2C 96 CF 9A 35 FF 02 75 FF A3 40 3E C5 2E 50 -- 07AA40
4E FF FF 3D E9 03 74 00 3D 83 0E 7E C5 18 C4 83 -- 07AA50
A3 48 3E C5 2E 43 74 00 3D 80 A3 44 3E C5 2E E8 -- 07AA60
2E 00 6A 00 6A 0E 76 FF 10 76 FF 39 74 00 3D 80 -- 07AA70
6A E0 76 FF E2 76 FF A3 4C 36 FF 2E A3 4E 36 FF -- 07AA80
00 54 5C A2 9A 50 E4 2A 05 8A A3 1C 3E C5 2E 16 -- 07AA90
46 C7 FE ED E9 03 74 00 3D 83 0E 7E C5 14 C4 83 -- 07AAA0
56 8B EE 46 03 05 03 DA 46 8B EA 7E C5 00 00 E6 -- 07AAB0
E9 03 7C E4 46 3B E6 46 8B CC 56 89 CA 46 89 F0 -- 07AAC0
48 3E C5 2E 68 74 00 3D 80 A3 44 3E C5 2E 01 15 -- 07AAD0
E7 C1 E6 7E 8B A2 CC 36 C4 2E 5E 74 00 3D 80 A3 -- 07AAE0
7E 8B 3A 74 04 3B 26 05 8B E2 5E 8E E0 7E 03 02 -- 07AAF0
28 74 04 3B 26 05 8B E0 7E 03 47 47 02 E7 C1 E6 -- 07AB00
3B 26 05 8B E0 7E 03 02 E7 C1 E4 7E 03 E6 7E 8B -- 07AB10
7E 03 47 47 02 E7 C1 E4 7E 03 E6 7E 8B 15 74 04 -- 07AB20
C7 05 EB 00 01 DE 46 C7 07 75 04 3B 26 05 8B E0 -- 07AB30
C5 2E 10 74 00 3D 80 A3 44 3E C5 2E 00 00 DE 46 -- 07AB40
7E C5 7F 74 00 DE 7E 83 06 74 00 3D 80 A3 48 3E -- 07AB50
7E 03 E7 D1 00 F0 E7 81 F8 8B E4 2A 01 45 8A CA -- 07AB60
8A 01 45 88 CA 7E C5 00 FF 25 05 8B 0C 5E 8E 0A -- 07AB70
5E 8E 0A 7E 03 E7 D1 00 F0 E7 81 F8 8B E4 2A 05 -- 07AB80
03 45 8A 05 88 CA 7E C5 00 FF 25 02 00 85 8B 0C -- 07AB90
0C 5E 8E 0A 7E 03 E7 D1 00 F0 E7 81 F8 8B E4 2A -- 07ABA0
02 45 8A 03 45 88 CA 7E C5 00 FF 25 04 00 85 8B -- 07ABB0
0C 5E 8E 0A 7E 03 E7 D1 00 F0 E7 81 F8 8B E4 2A -- 07ABC0
E6 46 FF 02 45 88 CA 7E C5 00 FF 25 06 00 85 8B -- 07ABD0
6A 00 6A 0E 76 FF 10 76 FF FE E0 E9 04 CA 46 83 -- 07ABE0
46 83 EA 7E C5 A3 2C 36 FF 2E A3 2E 36 FF 2E 00 -- 07ABF0
52 F0 56 8B EE 46 03 05 03 DA 46 8B 02 EA 01 FE -- 07AC00
E4 2A 05 8A A3 5C 3E C5 2E 50 E4 2A FD 46 8A 50 -- 07AC10
74 00 3D 83 0E 7E C5 14 C4 83 00 54 5C A2 9A 50 -- 07AC20
A3 38 3E C5 2E 05 FF A3 34 3E C5 2E FD 69 E9 03 -- 07AC30
83 A3 58 3E C5 2E 02 05 83 A3 54 3E C5 2E 05 FF -- 07AC40
10 76 FF FD AA E9 00 D8 56 83 01 D6 46 83 02 05 -- 07AC50
A0 F7 9A 35 FF 02 75 FF A3 40 3E C5 2E 0E 76 FF -- 07AC60
FD 1D E9 03 74 00 3D 83 0E 7E C5 08 C4 83 00 2C -- 07AC70
80 A3 48 3E C5 2E 18 74 00 3D 80 A3 44 3E C5 2E -- 07AC80
83 00 64 4E E3 9A E0 76 FF E2 76 FF 0E 74 00 3D -- 07AC90
C7 00 00 08 C8 57 56 CB 5E 5F C9 9B C0 2B 04 C4 -- 07ACA0
F8 46 C7 00 00 05 C7 A3 28 3E C5 2E 00 00 FA 46 -- 07ACB0

FC 46 C7 50 7D 04 FE 7E 83 00 00 FE 46 C7 00 01 -- 07ACC0
5E 8B E7 D1 FC 7E 8B 3F 7D 01 00 FC 7E 81 00 00 -- 07ACD0
```

540

```
86 C7 05 89 A2 CC 3E C5 2E FF 00 05 E4 2A 05 8A -- 07A1E0
00 FE D6 86 C7 39 7D 04 FE D8 BE 83 00 00 FE D8 -- 07A1F0
D1 FE D6 B6 8B 25 7D 01 00 FE D6 BE 81 00 01 FE -- 07A200
1E 8E 2E A2 D4 3E 03 2E 09 E7 C1 FE D8 BE 8B E6 -- 07A210
D3 EB FE D6 86 FF 05 89 FE D6 86 8B FE 03 A2 D6 -- 07A220
A2 D8 36 FF 2E A2 DA 36 FF 2E C0 EB FE D8 86 FF -- 07A230
99 05 8B A2 E0 3E C5 2E 04 C4 83 00 5C D3 78 9A -- 07A240
8B A2 E8 3E C5 2E 02 55 89 05 89 A2 DC 3E C5 2E -- 07A250
F0 3E C5 2E 02 55 89 05 89 A2 E4 3E C5 2E 99 05 -- 07A260
8B A2 F8 3E C5 2E 05 89 A2 EC 3E C5 2E 05 8B A2 -- 07A270
68 00 6A 18 00 68 00 6A 05 89 A2 F4 3E C5 2E 05 -- 07A280
83 00 01 05 02 55 8B 05 8B A2 DC 3E C5 2E 18 00 -- 07A290
01 05 02 55 8B 05 8B A2 E4 3E C5 2E 50 52 00 D2 -- 07A2A0
02 B9 08 C4 83 00 5C EE DC 9A 50 52 00 D2 83 00 -- 07A2B0
C4 83 00 5C EF 6E 9A 50 52 FA E2 D2 D1 E0 D1 00 -- 07A2C0
C4 83 00 5C EE DC 9A 50 52 00 D2 83 00 01 05 08 -- 07A2D0
46 C6 00 00 D6 46 C7 FE D4 96 89 FE D2 86 89 08 -- 07A2E0
DC 46 89 00 D2 83 30 00 05 00 02 D8 46 C7 02 DA -- 07A2F0
FF 2E 50 D6 46 8D 16 12 6A 00 DB 46 C6 DE 56 89 -- 07A300
36 FF 2E A2 FE 36 FF 2E A2 D8 36 FF 2E A2 DA 36 -- 07A310
C4 46 8D 16 50 52 0C C4 83 00 5C 94 8D 9A A2 FC -- 07A320
FF 0E 74 00 D2 7E 83 0A C4 83 00 5C ED 6E 9A 50 -- 07A330
C4 46 8B 02 69 E9 02 C4 83 00 2C D0 F8 9A D2 76 -- 07A340
88 C0 2B 02 55 89 05 89 A3 00 3E C5 2E C6 56 8B -- 07A350
2A FE DF 86 88 00 04 B8 E0 46 88 E4 2A FE DE 86 -- 07A360
01 B8 E2 46 89 FE E0 86 89 00 0F B8 E1 46 88 E4 -- 07A370
E3 86 88 00 08 B8 E4 46 88 E4 2A FE E2 86 88 00 -- 07A380
46 88 E4 2A FE E4 86 88 C0 2B E5 46 88 E4 2A FE -- 07A390
E4 3E C5 2E E7 46 88 E4 2A FE E5 86 88 C0 2B E6 -- 07A3A0
89 FA E2 D2 D1 E0 D1 00 01 B9 02 55 8B 05 8B A2 -- 07A3B0
89 FE E8 96 89 FE E6 86 89 FF 10 96 89 FF 0E 86 -- 07A3C0
89 02 55 8B 05 8B A2 DC 3E C5 2E EA 56 89 E8 46 -- 07A3D0
89 FE EC 96 89 FE EA 86 89 FF 14 96 89 FF 12 86 -- 07A3E0
FE EE 96 DD 9B A3 04 06 DD 2E 9B EE 56 89 EC 46 -- 07A3F0
F6 96 DD 9B A3 04 06 DD 2E 9B F0 5E DD 9B 01 FE -- 07A400
FE FE 9E DD 9B A3 04 06 DD 2E 9B F8 5E DD 9B FE -- 07A410
99 9A EE D9 9B FF 06 9E DD 9B A3 04 06 DD 2E 9B -- 07A420
89 FF 16 86 89 08 C4 83 00 5C EE 2F 9A 00 5C ED -- 07A430
00 5C EE 2F 9A 00 5C ED 99 9A EE D9 9B FF 18 96 -- 07A440
FE DA 86 8D 16 FF 1C 96 89 FF 1A 86 89 08 C4 83 -- 07A450
35 FF 02 75 FF A3 00 3E C5 2E 50 E0 46 8D 16 50 -- 07A460
FF 07 74 00 FE DA BE 83 0C C4 83 00 54 F8 25 9A -- 07A470
DE 86 8D 16 50 FE DA 86 8D 16 FE BE E9 FE DA B6 -- 07A480
54 F5 DA 9A 35 FF 02 75 FF A3 00 3E C5 2E 50 FE -- 07A490
A2 F4 3E C5 2E D4 75 00 FE DA BE 83 0C C4 83 00 -- 07A4A0
3E C5 2E 02 55 89 05 89 A3 0C 3E C5 2E 99 05 8B -- 07A4B0
2E 02 55 89 05 89 A3 10 3E C5 2E 99 05 8B A2 EC -- 07A4C0
26 04 03 26 99 05 8B A2 F4 3E C5 2E A2 DC 36 C4 -- 07A4D0
05 89 A3 14 3E C5 2E 00 DA 83 00 01 2D 02 54 13 -- 07A4E0
99 05 8B A2 EC 3E C5 2E A2 E4 36 C4 2E 02 55 89 -- 07A4F0
3E C5 2E 00 DA 83 00 01 2D 02 54 13 26 04 03 26 -- 07A500
3E C5 2E 50 FE DA 86 8D 16 02 55 89 05 89 A3 18 -- 07A510
83 06 C4 83 00 4C 92 17 9A 50 E4 2A 05 8A A3 1C -- 07A520
C7 5D 75 00 0A 7E 83 FF 46 E9 03 74 00 FE DA BE -- 07A530
FE D6 86 C7 50 7D 04 FE D8 BE 83 00 00 FE D8 86 -- 07A540
E6 D1 FE D6 B6 8B 3C 7D 01 00 FE D6 BE 81 00 00 -- 07A550
26 1E 8E 2E A3 24 3E 03 2E 09 E7 C1 FE D8 BE 8B -- 07A560
C1 FE D8 BE 8B E6 D1 FE D6 B6 8B 05 8B FE 03 A3 -- 07A570
```

541

```
05  89  FE  03  A3  22  1E  8E  2E  A3  20  3E  03  2E  09  E7  --  07A580
4C  9C  58  9A  A9  EB  FE  D8  86  FF  BC  EB  FE  D6  86  FF  --  07A590
74  00  3D  83  A3  28  3E  C5  2E  0F  75  01  0A  7E  83  00  --  07A5A0
C8  57  56  CB  5E  5F  C9  9B  C0  2B  00  4C  A0  B7  9A  05  --  07A5B0
C6  13  FB  46  C6  01  FD  46  C6  00  FF  46  C6  00  00  22  --  07A5C0
A3  0C  3E  C5  2E  00  F5  46  C6  00  F7  46  C6  01  F9  46  --  07A5D0
05  8B  A3  14  3E  C5  2E  05  89  A3  2C  3E  C5  2E  05  8B  --  07A5E0
C5  2E  05  8B  A3  10  3E  C5  2E  05  89  A3  30  3E  C5  2E  --  07A5F0
C5  2E  05  89  A3  34  3E  C5  2E  05  89  A3  38  3E  01  FE  --  07A600
8B  A3  0C  3E  C5  2E  CA  8B  D8  8B  99  05  8B  A2  F4  3E  --  07A610
E2  D2  D1  E0  D1  00  02  B9  D1  1B  C3  2B  02  55  8B  05  --  07A620
36  FF  2E  0C  76  FF  0E  76  FF  E8  56  89  E6  46  89  FA  --  07A630
55  8B  05  8B  A2  DC  3E  C5  2E  A3  40  36  FF  2E  A3  42  --  07A640
3E  C5  2E  D0  8B  C0  2B  50  52  00  DA  83  00  01  2D  02  --  07A650
8A  50  E4  2A  F5  46  8A  50  52  02  55  89  05  89  A3  3C  --  07A660
A3  00  3E  C5  2E  50  E4  2A  F9  46  8A  50  E4  2A  F7  46  --  07A670
0C  7E  C5  1A  C4  83  00  4C  78  7A  9A  35  FF  02  75  FF  --  07A680
E9  02  C4  83  00  2C  D0  F8  9A  35  FF  0D  74  00  3D  83  --  07A690
C5  2E  50  E4  2A  FF  46  8A  0C  76  FF  0E  76  FF  01  3B  --  07A6A0
8B  A3  10  3E  C5  2E  CA  8B  D8  8B  99  05  8B  A2  EC  3E  --  07A6B0
FF  A3  40  3E  C5  2E  50  52  D1  1B  C3  2B  02  55  8B  05  --  07A6C0
83  0C  7E  C5  0E  C4  83  00  4C  7D  9F  9A  35  FF  02  75  --  07A6D0
05  8B  A3  10  3E  C5  2E  00  00  EA  46  C7  B1  75  00  3D  --  07A6E0
46  8B  A3  18  3E  C5  2E  E4  56  89  E2  46  89  02  55  8B  --  07A6F0
05  3B  00  AA  E9  03  7E  0C  7C  02  55  3B  E4  56  8B  E2  --  07A700
76  FF  0E  76  FF  3D  75  00  EA  7E  83  00  A3  E9  03  76  --  07A710
EC  46  8D  16  50  DE  46  8D  16  50  E4  2A  FD  46  8A  0C  --  07A720
A3  40  3E  C5  2E  50  F0  46  8D  16  50  EA  46  8D  16  50  --  07A730
0C  7E  C5  1A  C4  83  00  4C  82  A0  9A  35  FF  02  75  FF  --  07A740
76  FF  0E  76  FF  EA  4E  FF  FF  3D  E9  03  74  00  3D  83  --  07A750
C5  A3  2C  36  FF  2E  A3  2E  36  FF  2E  00  6A  00  6A  0C  --  07A760
56  8B  F0  46  03  05  03  E6  46  8B  02  EC  46  83  EC  7E  --  07A770
54  5C  A2  9A  0A  76  FF  50  E4  2A  FB  46  8A  50  52  F2  --  07A780
2E  FE  F6  E9  03  74  00  3D  83  0C  7E  C5  14  C4  83  00  --  07A790
E2  46  83  05  FF  A3  38  3E  C5  2E  05  FF  A3  34  3E  C5  --  07A7A0
C5  2E  0C  76  FF  0E  76  FF  FF  41  E9  00  E4  56  83  01  --  07A7B0
08  C4  83  00  4C  8B  5B  9A  35  FF  02  75  FF  A3  40  3E  --  07A7C0
5E  5F  C9  C0  2B  FE  BA  E9  03  74  00  3D  83  0C  7E  C5  --  07A7D0
C6  13  FD  46  C6  00  FF  46  C6  00  00  36  C8  57  56  CB  --  07A7E0
C6  00  F5  46  C6  00  F7  46  C6  01  FB  46  --  07A7F0
A3  04  06  DD  2E  9B  00  01  DE  46  C7  00  F3  46  01  FE  --  07A800
A3  2C  3E  C5  2E  05  8B  A3  0C  3E  C5  2E  CE  5E  D9  9B  --  07A810
05  89  A3  30  3E  C5  2E  05  8B  A3  14  3E  C5  2E  05  89  --  07A820
C5  2E  05  89  A3  38  3E  C5  2E  05  8B  A3  10  3E  C5  2E  --  07A830
8B  A3  14  3E  C5  2E  A3  0C  36  C4  2E  05  89  A3  34  3E  --  07A840
D2  83  00  01  05  02  54  1B  26  04  2B  26  02  55  8B  05  --  07A850
CA  8B  D8  8B  99  05  8B  A2  F4  3E  C5  2E  E4  46  89  00  --  07A860
02  B9  D1  1B  C3  2B  02  55  8B  05  8B  A3  0C  3E  C5  2E  --  07A870
3E  C5  2E  DC  56  89  DA  46  89  FA  E2  D2  D1  E0  D1  00  --  07A880
80  A3  48  3E  C5  2E  00  96  E9  03  75  00  3D  80  A3  44  --  07A890
55  8B  05  8B  A3  0C  3E  C5  2E  00  89  E9  03  75  00  3D  --  07A8A0
89  A3  4C  3E  C5  2E  FA  E2  D2  D1  E0  D1  00  01  B9  02  --  07A8B0
E0  D1  00  01  B9  02  55  8B  05  8B  A3  14  3E  C5  2E  05  --  07A8C0
89  A3  50  3E  C5  2E  00  D2  83  00  01  05  FA  E2  D2  D1  --  07A8D0
E0  D1  00  01  B9  02  55  8B  05  8B  A3  10  3E  C5  2E  05  --  07A8E0
A3  10  3E  C5  2E  05  89  A3  54  3E  C5  2E  FA  E2  D2  D1  --  07A8F0
01  05  FA  E2  D2  D1  E0  D1  00  01  B9  02  55  8B  05  8B  --  07A900
E0  C1  E4  46  8B  05  89  A3  58  3E  C5  2E  00  D2  83  00  --  07A910

E2  56  89  E0  46  89  02  C4  83  00  64  4E  56  9A  50  03  --  07A920
```

542

```
A3 40 36 FF 2E A3 42 36 FF 2E 0E 76 FF 10 76 FF -- 07A930
00 DA 83 00 01 2D 02 55 8B 05 8B A2 DC 3E C5 2E -- 07A940
02 55 89 05 89 A3 3C 3E C5 2E D0 8B C0 2B 50 52 -- 07A950
8D 16 50 E4 2A F5 46 8A 50 E4 2A F7 46 8A 50 52 -- 07A960
2E 50 E4 2A FB 46 8A 50 E4 2A F9 46 8A 50 CE 46 -- 07A970
C4 83 00 2C 6F 1C 9A 35 FF 02 75 FF A3 00 3E C5 -- 07A980
00 2C D0 F8 9A 35 FF 0D 74 00 3D 83 0E 7E C5 20 -- 07A990
2A F3 46 8A 0E 76 FF 10 76 FF 02 FA E9 02 C4 83 -- 07A9A0
99 05 8B A2 EC 3E C5 2E 50 E4 2A FF 46 8A 50 E4 -- 07A9B0
C3 2B 02 55 8B 05 8B A3 10 3E C5 2E CA 8B D8 8B -- 07A9C0
D7 9A 35 FF 02 75 FF A3 40 3E C5 2E 50 52 D1 1B -- 07A9D0
46 C7 AB 75 00 3D 83 0E 7E C5 10 C4 83 00 2C 79 -- 07A9E0
D6 46 89 02 55 8B 05 8B A3 10 3E C5 2E 00 00 E8 -- 07A9F0
D8 56 8B D6 46 8B A3 18 3E C5 2E D8 56 89 01 FE -- 07AA00
3A E9 03 76 05 3B 02 41 E9 03 7E 0C 7C 02 55 3B -- 07AA10
46 8D 16 0E 76 FF 10 76 FF 37 75 00 E8 7E 83 02 -- 07AA20
EE 46 8D 16 50 E8 46 8D 16 50 EA 46 8D 16 50 D2 -- 07AA30
00 2C 96 CF 9A 35 FF 02 75 FF A3 40 3E C5 2E 50 -- 07AA40
4E FF FF 3D E9 03 74 00 3D 83 0E 7E C5 18 C4 83 -- 07AA50
A3 48 3E C5 2E 43 74 00 3D 80 A3 44 3E C5 2E E8 -- 07AA60
2E 00 6A 00 6A 0E 76 FF 10 76 FF 39 74 00 3D 80 -- 07AA70
6A E0 76 FF E2 76 FF A3 4C 36 FF 2E A3 4E 36 FF -- 07AA80
00 54 5C A2 9A 50 E4 2A 05 8A A3 1C 3E C5 2E 16 -- 07AA90
46 C7 FE ED E9 03 74 00 3D 83 0E 7E C5 14 C4 83 -- 07AAA0
56 8B EE 46 03 05 03 DA 46 8B EA 7E C5 00 00 E6 -- 07AAB0
E9 03 7C E4 46 3B E6 46 8B CC 56 89 CA 46 89 F0 -- 07AAC0
48 3E C5 2E 68 74 00 3D 80 A3 44 3E C5 2E 01 15 -- 07AAD0
E7 C1 E6 7E 8B A2 CC 36 C4 2E 5E 74 00 3D 80 A3 -- 07AAE0
7E 8B 3A 74 04 3B 26 05 8B E2 5E 8E E0 7E 03 02 -- 07AAF0
28 74 04 3B 26 05 8B E0 7E 03 47 47 02 E7 C1 E6 -- 07AB00
3B 26 05 8B E0 7E 03 02 E7 C1 E4 7E 03 E6 7E 8B -- 07AB10
7E 03 47 47 02 E7 C1 E4 7E 03 E6 7E 8B 15 74 04 -- 07AB20
C7 05 EB 00 01 DE 46 C7 07 75 04 3B 26 05 8B E0 -- 07AB30
C5 2E 10 74 00 3D 80 A3 44 3E C5 2E 00 00 DE 46 -- 07AB40
7E C5 7F 74 00 DE 7E 83 06 74 00 3D 80 A3 48 3E -- 07AB50
7E 03 E7 D1 00 F0 E7 81 F8 8B E4 2A 01 45 8A CA -- 07AB60
8A 01 45 88 CA 7E C5 00 FF 25 05 8B 0C 5E 8E 0A -- 07AB70
5E 8E 0A 7E 03 E7 D1 00 F0 E7 81 F8 8B E4 2A 05 -- 07AB80
03 45 8A 05 88 CA 7E C5 00 FF 25 02 00 85 8B 0C -- 07AB90
0C 5E 8E 0A 7E 03 E7 D1 00 F0 E7 81 F8 8B E4 2A -- 07ABA0
02 45 8A 03 45 88 CA 7E C5 00 FF 25 04 00 85 8B -- 07ABB0
0C 5E 8E 0A 7E 03 E7 D1 00 F0 E7 81 F8 8B E4 2A -- 07ABC0
E6 46 FF 02 45 88 CA 7E C5 00 FF 25 06 00 85 8B -- 07ABD0
6A 00 6A 0E 76 FF 10 76 FF FE E0 E9 04 CA 46 83 -- 07ABE0
46 83 EA 7E C5 A3 2C 36 FF 2E A3 2E 36 FF 2E 00 -- 07ABF0
52 F0 56 8B EE 46 03 05 03 DA 46 8B 02 EA 01 FE -- 07AC00
E4 2A 05 8A A3 5C 3E C5 2E 50 E4 2A FD 46 8A 50 -- 07AC10
74 00 3D 83 0E 7E C5 14 C4 83 00 54 5C A2 9A 50 -- 07AC20
A3 38 3E C5 2E 05 FF A3 34 3E C5 2E FD 69 E9 03 -- 07AC30
83 A3 58 3E C5 2E 02 05 83 A3 54 3E C5 2E 05 FF -- 07AC40
10 76 FF FD AA E9 00 D8 56 83 01 D6 46 83 02 05 -- 07AC50
A0 F7 9A 35 FF 02 75 FF A3 40 3E C5 2E 0E 76 FF -- 07AC60
FD 1D E9 03 74 00 3D 83 0E 7E C5 08 C4 83 00 2C -- 07AC70
80 A3 48 3E C5 2E 18 74 00 3D 80 A3 44 3E C5 2E -- 07AC80
83 00 64 4E E3 9A E0 76 FF E2 76 FF 0E 74 00 3D -- 07AC90
C7 00 00 08 C8 57 56 CB 5E 5F C9 9B C0 2B 04 C4 -- 07ACA0
F8 46 C7 00 00 05 C7 A3 28 3E C5 2E 00 00 FA 46 -- 07ACB0

FC 46 C7 50 7D 04 FE 7E 83 00 00 FE 46 C7 00 01 -- 07ACC0
5E 8B E7 D1 FC 7E 8B 3F 7D 01 00 FC 7E 81 00 00 -- 07ACD0
```

543

```
DF  03  A3  26  06  8E  2E  A3  24  1E  03  2E  09  E3  C1  FE  --  07ACE0
A3  20  3E  03  2E  09  E7  C1  FE  7E  8B  E6  D1  FC  76  8B  --  07ACF0
46  C7  05  74  07  3B  26  05  8B  FE  03  A3  22  1E  8E  2E  --  07AD00
F8  7E  83  AA  EB  FE  46  FF  BA  EB  FC  46  FF  00  00  F8  --  07AD10
05  8B  A2  F4  3E  C5  2E  01  0F  E9  00  01  B8  06  74  00  --  07AD20
A2  EC  3E  C5  2E  02  55  89  05  89  A3  0C  3E  C5  2E  99  --  07AD30
36  C4  2E  02  55  89  05  89  A3  10  3E  C5  2E  99  05  8B  --  07AD40
54  13  26  04  03  26  99  05  8B  A2  F4  3E  C5  2E  A2  DC  --  07AD50
55  89  05  89  A3  14  3E  C5  2E  00  DA  83  00  01  2D  02  --  07AD60
03  26  99  05  8B  A2  EC  3E  C5  2E  A2  E4  36  C4  2E  02  --  07AD70
A3  18  3E  C5  2E  00  DA  83  00  01  2D  02  54  13  26  04  --  07AD80
2E  A3  26  36  FF  2E  50  FA  46  8D  16  02  55  89  05  89  --  07AD90
00  FA  7E  83  08  C4  83  00  4C  94  39  9A  A3  24  36  FF  --  07ADA0
2E  79  EB  02  C4  83  00  2C  D0  F8  9A  FA  76  FF  0D  74  --  07ADB0
35  FF  50  FA  46  8D  16  1A  74  00  3D  83  A3  60  3E  C5  --  07ADC0
FA  7E  83  0A  C4  83  00  64  40  D0  9A  01  F7  68  03  6A  --  07ADD0
46  C7  48  7D  04  FE  7E  83  00  00  FE  46  C7  CF  75  00  --  07ADE0
8B  E6  D1  FC  76  8B  37  7D  01  00  FC  7E  81  00  00  FC  --  07ADF0
26  1E  8E  2E  A3  24  3E  03  2E  09  E7  C1  FE  7E  01  FE  --  07AE00
09  E7  C1  FE  7E  8B  E6  D1  FC  76  8B  05  8B  FE  03  A3  --  07AE10
46  FF  05  89  FE  03  A3  22  1E  8E  2E  A3  20  3E  03  2E  --  07AE20
57  56  CB  5E  5F  C9  C0  2B  B2  EB  FE  46  FF  C2  EB  FC  --  07AE30
46  C7  00  01  FC  46  C7  00  00  FE  46  C7  00  00  08  C8  --  07AE40
7E  81  00  00  F8  46  C7  39  7D  04  FA  7E  83  00  00  FA  --  07AE50
09  E7  C1  FA  7E  8B  E6  D1  F8  76  8B  28  7D  01  00  F8  --  07AE60
46  3B  05  8B  FE  03  A3  22  1E  8E  2E  A3  20  3E  03  2E  --  07AE70
FA  46  FF  D1  EB  F8  46  FF  00  00  FC  46  C7  05  74  F8  --  07AE80
00  3D  83  A3  28  3E  C5  2E  0F  74  00  FC  7E  83  C1  EB  --  07AE90
00  00  05  C7  A3  28  3E  C5  2E  00  4C  9E  46  9A  05  74  --  07AEA0
F4  3E  C5  2E  00  98  E9  00  01  B8  06  74  00  FC  7E  83  --  07AEB0
C5  2E  02  55  89  05  89  A3  0C  3E  C5  2E  99  05  8B  A2  --  07AEC0
02  55  89  05  89  A3  10  3E  C5  2E  99  05  8B  A2  EC  3E  --  07AED0
04  03  26  99  05  8B  A2  F4  3E  C5  2E  A2  DC  36  C4  2E  --  07AEE0
89  A3  14  3E  C5  2E  00  DA  83  00  01  2D  02  54  13  26  --  07AEF0
05  8B  A2  EC  3E  C5  2E  A2  E4  36  C4  2E  02  55  89  05  --  07AF00
C5  2E  00  DA  83  00  01  2D  02  54  13  26  04  03  26  99  --  07AF10
36  FF  2E  50  FE  46  8D  16  02  55  89  05  89  A3  18  3E  --  07AF20
83  08  C4  83  00  4C  94  39  9A  A2  D4  36  FF  2E  A2  D6  --  07AF30
02  C4  83  00  2C  D0  F8  9A  FE  76  FF  0D  74  00  FE  7E  --  07AF40
46  C7  00  00  02  C8  57  56  CB  5E  5F  C9  C0  2B  02  EB  --  07AF50
F4  3E  C5  2E  00  00  05  C7  A3  28  3E  C5  2E  00  00  FE  --  07AF60
C5  2E  02  55  89  05  89  A3  0C  3E  C5  2E  99  05  8B  A2  --  07AF70
02  55  89  05  89  A3  10  3E  C5  2E  99  05  8B  A2  EC  3E  --  07AF80
04  03  26  99  05  8B  A2  F4  3E  C5  2E  A2  DC  36  C4  2E  --  07AF90
89  A3  14  3E  C5  2E  00  DA  83  00  01  2D  02  54  13  26  --  07AFA0
05  8B  A2  EC  3E  C5  2E  A2  E4  36  C4  2E  02  55  89  05  --  07AFB0
C5  2E  00  DA  83  00  01  2D  02  54  13  26  04  03  26  99  --  07AFC0
36  FF  2E  50  FE  46  8D  16  02  55  89  05  89  A3  18  3E  --  07AFD0
83  08  C4  83  00  4C  94  39  9A  A3  64  36  FF  2E  A3  66  --  07AFE0
02  C4  83  00  2C  D0  F8  9A  FE  76  FF  0D  74  00  FE  7E  --  07AFF0
00  00  08  C8  57  56  CB  5E  5F  C9  C0  2B  02  EB  01  FE  --  07B000
83  00  00  FA  46  C7  00  01  FE  46  C7  00  00  FC  46  C7  --  07B010
7D  01  00  F8  7E  81  00  00  F8  46  C7  39  7D  04  FA  7E  --  07B020
20  3E  03  2E  09  E7  C1  FA  7E  8B  E6  D1  F8  76  8B  28  --  07B030
C7  05  74  F8  46  3B  05  8B  FE  03  A3  22  1E  8E  2E  A3  --  07B040
7E  83  C1  EB  FA  46  FF  D1  EB  F8  46  FF  00  00  FE  46  --  07B050

8B  A2  F4  3E  C5  2E  00  98  E9  00  01  B8  06  74  00  FE  --  07B060
EC  3E  C5  2E  02  55  89  05  89  A3  0C  3E  C5  2E  99  05  --  07B070
C4  2E  02  55  89  05  89  A3  10  3E  C5  2E  99  05  8B  A2  --  07B080
```

EP 0 533 348 A2

```
13  26  04  03  26  99  05  8B  A2  F4  3E  C5  2E  A2  DC  36  --  07B090
89  05  89  A3  14  3E  C5  2E  00  DA  83  00  01  2D  02  54  --  07B0A0
26  99  05  8B  A2  EC  3E  C5  2E  A2  E4  36  C4  2E  02  55  --  07B0B0
18  3E  C5  2E  00  DA  83  00  01  2D  02  54  13  26  04  03  --  07B0C0
A3  22  36  FF  2E  50  FC  46  8D  16  02  55  89  05  89  A3  --  07B0D0
FC  7E  83  08  C4  83  00  4C  94  39  9A  A3  20  36  FF  2E  --  07B0E0
02  EB  02  C4  83  00  2C  D0  F8  9A  FC  76  FF  0D  74  00  --  07B0F0
00  FE  46  C7  00  00  02  C8  57  56  CB  5E  5F  C9  C0  2B  --  07B100
50  FE  46  8D  16  20  74  00  3D  83  A3  28  3E  C5  2E  00  --  07B110
76  FF  0D  74  00  FE  7E  83  04  C4  83  00  4C  9D  DE  9A  --  07B120
00  4C  9E  8B  9A  51  EB  02  C4  83  00  2C  D0  F8  9A  FE  --  07B130
9A  A3  24  36  FF  2E  A3  26  36  FF  2E  50  FE  46  8D  16  --  07B140
3E  C5  2E  D1  75  00  FE  7E  83  08  C4  83  00  4C  94  39  --  07B150
1A  74  00  3D  83  A3  60  3E  C5  2E  00  01  05  C7  A3  28  --  07B160
64  40  D0  9A  01  F7  68  03  6A  35  FF  50  FE  46  8D  16  --  07B170
CB  5E  5F  C9  C0  2B  A4  75  00  FE  7E  83  0A  C4  83  00  --  07B180
FF  53  74  00  3D  83  A3  28  3E  C5  2E  EC  8B  55  57  56  --  07B190
9A  A3  20  36  FF  2E  A3  22  36  FF  2E  0A  76  FF  0C  76  --  07B1A0
FF  0C  74  00  3D  83  0A  7E  C5  08  C4  83  00  4C  94  39  --  07B1B0
A3  60  3E  C5  2E  29  EB  02  C4  83  00  2C  D0  F8  9A  35  --  07B1C0
68  03  6A  35  FF  0A  76  FF  0C  76  FF  1D  74  00  3D  83  --  07B1D0
00  3D  83  0A  7E  C5  0A  C4  83  00  64  40  D0  9A  01  F7  --  07B1E0
46  C7  00  00  02  C8  57  56  CB  5E  5F  C9  C0  2B  CD  75  --  07B1F0
83  00  4C  9D  DE  9A  50  FE  46  8D  16  00  00  FE  01  FE  --  07B200
00  2C  D0  F8  9A  FE  76  FF  0D  74  00  FE  7E  83  04  C4  --  07B210
C0  2B  00  00  05  C7  A3  28  3E  C5  2E  0B  EB  02  C4  83  --  07B220
56  CB  5E  5F  C9  C0  2B  EC  8B  55  57  56  CB  5E  5F  C9  --  07B230
9A  A3  68  36  FF  2E  A3  6A  36  FF  2E  00  00  04  C8  57  --  07B240
2E  99  05  8B  A3  68  3E  C5  2E  04  C4  83  00  5C  E0  79  --  07B250
05  89  A3  0C  3E  C5  2E  99  C6  8B  F0  8B  A3  6C  3E  F7  --  07B260
A3  6C  3E  F7  2E  99  05  8B  A3  6E  3E  C5  2E  02  55  89  --  07B270
2E  02  55  89  05  89  A3  10  3E  C5  2E  99  C6  8B  F0  8B  --  07B280
C6  8B  F0  8B  A3  6C  3E  F7  2E  99  05  8B  A3  72  3E  C5  --  07B290
2B  02  55  8B  05  8B  A3  0C  3E  C5  2E  CA  8B  D8  8B  99  --  07B2A0
99  05  8B  A3  72  3E  C5  2E  02  55  89  05  89  D1  1B  C3  --  07B2B0
C5  2E  CA  8B  D8  8B  99  C6  8B  F0  8B  A3  6C  3E  F7  2E  --  07B2C0
55  89  05  89  D1  1B  C3  2B  02  55  8B  05  8B  A3  10  3E  --  07B2D0
03  26  99  05  8B  A3  72  3E  C5  2E  A3  0C  36  C4  2E  02  --  07B2E0
2E  02  55  89  05  89  A3  14  3E  C5  2E  02  54  13  26  04  --  07B2F0
26  04  03  26  99  05  8B  A3  72  3E  C5  2E  A3  10  36  C4  --  07B300
36  C4  2E  02  55  89  05  89  A3  18  3E  C5  2E  02  54  13  --  07B310
07  7F  02  54  3B  26  99  05  8B  A2  F4  3E  C5  2E  A3  0C  --  07B320
2E  99  05  8B  A2  F4  3E  C5  2E  12  76  04  3B  26  17  7C  --  07B330
C5  2E  A3  10  36  C4  2E  02  55  89  05  89  A3  0C  3E  C5  --  07B340
3B  26  17  7C  07  7F  02  54  3B  26  99  05  8B  A2  EC  3E  --  07B350
A3  10  3E  C5  2E  99  05  8B  A2  EC  3E  C5  2E  12  76  04  --  07B360
89  02  55  8B  05  8B  A3  14  3E  C5  2E  02  55  89  05  89  --  07B370
8B  A2  F4  3E  C5  2E  A2  DC  36  C4  2E  FE  56  89  FC  46  --  07B380
3B  00  DA  83  00  01  2D  02  54  13  26  04  03  26  99  05  --  07B390
A2  DC  36  C4  2E  24  73  FC  46  3B  29  7F  07  7C  FE  56  --  07B3A0
2D  02  54  13  26  04  03  26  99  05  8B  A2  F4  3E  C5  2E  --  07B3B0
2E  02  55  89  05  89  A3  14  3E  C5  2E  00  DA  83  00  01  --  07B3C0
2E  FE  56  89  FC  46  89  02  55  8B  05  8B  A3  18  3E  C5  --  07B3D0
26  04  03  26  99  05  8B  A2  EC  3E  C5  2E  A2  E4  36  C4  --  07B3E0
29  7F  07  7C  FE  56  3B  00  DA  83  00  01  2D  02  54  13  --  07B3F0

EC  3E  C5  2E  A2  E4  36  C4  2E  24  73  FC  46  3B  01  FE  --  07B400
DA  83  00  01  2D  02  54  13  26  04  03  26  99  05  8B  A2  --  07B410
5E  5F  C9  C0  2B  02  55  89  05  89  A3  18  3E  C5  2E  00  --  07B420
2B  00  32  05  C7  A3  72  3E  C5  2E  EC  8B  55  57  56  CB  --  07B430
```

545

```
C7  A3  72  3E  C5  2E  EC  8B  55  57  56  CB  5E  5F  C9  C0  --  07B440
C5  2E  EC  8B  55  57  56  CB  5E  5F  C9  C0  2B  00  64  05  --  07B450
C8  57  56  CB  5E  5F  C9  C0  2B  00  C8  05  C7  A3  72  3E  --  07B460
99  05  8B  A3  68  3E  C5  2E  00  00  FE  46  C7  00  00  06  --  07B470
89  A3  0C  3E  C5  2E  99  C6  8B  F0  8B  A3  6C  3E  F7  2E  --  07B480
6C  3E  F7  2E  99  05  8B  A3  6E  3E  C5  2E  02  55  89  05  --  07B490
02  55  89  05  89  A3  10  3E  C5  2E  99  C6  8B  F0  8B  A3  --  07B4A0
8B  F0  8B  A3  6C  3E  F7  2E  99  05  8B  A3  72  3E  C5  2E  --  07B4B0
02  55  8B  05  8B  A3  0C  3E  C5  2E  CA  8B  D8  8B  99  C6  --  07B4C0
05  8B  A3  72  3E  C5  2E  02  55  89  05  89  D1  1B  C3  2B  --  07B4D0
2E  CA  8B  D8  8B  99  C6  8B  F0  8B  A3  6C  3E  F7  2E  99  --  07B4E0
89  05  89  D1  1B  C3  2B  02  55  8B  05  8B  A3  10  3E  C5  --  07B4F0
26  99  05  8B  A3  72  3E  C5  2E  A3  0C  36  C4  2E  02  55  --  07B500
02  55  89  05  89  A3  14  3E  C5  2E  02  54  13  26  04  03  --  07B510
04  03  26  99  05  8B  A3  72  3E  C5  2E  A3  10  36  C4  2E  --  07B520
C4  2E  02  55  89  05  89  A3  18  3E  C5  2E  02  54  13  26  --  07B530
7F  02  54  3B  26  99  05  8B  A2  F4  3E  C5  2E  A3  0C  36  --  07B540
99  05  8B  A2  F4  3E  C5  2E  12  76  04  3B  26  17  7C  07  --  07B550
2E  A3  10  36  C4  2E  02  55  89  05  89  A3  0C  3E  C5  2E  --  07B560
26  17  7C  07  7F  02  54  3B  26  99  05  8B  A2  EC  3E  C5  --  07B570
10  3E  C5  2E  99  05  8B  A2  EC  3E  C5  2E  12  76  04  3B  --  07B580
02  55  8B  05  8B  A3  14  3E  C5  2E  02  55  89  05  89  A3  --  07B590
A2  F4  3E  C5  2E  A2  DC  36  C4  2E  FC  56  89  FA  46  89  --  07B5A0
00  DA  83  00  01  2D  02  54  13  26  04  03  26  99  05  8B  --  07B5B0
DC  36  C4  2E  24  73  FA  46  3B  29  7F  07  7C  FC  56  3B  --  07B5C0
02  54  13  26  04  03  26  99  05  8B  A2  F4  3E  C5  2E  A2  --  07B5D0
02  55  89  05  89  A3  14  3E  C5  2E  00  DA  83  00  01  2D  --  07B5E0
FC  56  89  FA  46  89  02  55  8B  05  8B  A3  18  3E  C5  2E  --  07B5F0
26  99  05  8B  A2  EC  3E  C5  2E  A2  E4  36  C4  2E  01  FE  --  07B600
7C  FC  56  3B  00  DA  83  00  01  2D  02  54  13  26  04  03  --  07B610
3E  C5  2E  A2  E4  36  C4  2E  24  73  FA  46  3B  29  7F  07  --  07B620
83  00  01  2D  02  54  13  26  04  03  26  99  05  8B  A2  EC  --  07B630
FE  46  8D  16  02  55  89  05  89  A3  18  3E  C5  2E  00  DA  --  07B640
00  4C  94  39  9A  A3  24  36  FF  2E  A3  26  36  FF  2E  50  --  07B650
2C  D0  F8  9A  FE  76  FF  0D  74  00  FE  7E  83  08  C4  83  --  07B660
00  3C  51  20  CB  5E  5F  C9  C0  2B  02  EB  02  C4  83  00  --  07B670
00  3C  51  28  00  3C  91  10  00  3C  51  22  00  3C  91  0E  --  07B680
00  3C  51  04  00  3C  AE  D6  00  3C  51  08  00  3C  50  EE  --  07B690
00  3C  51  26  00  3C  AE  DC  00  3C  51  24  00  3C  AE  D8  --  07B6A0
00  00  00  00  00  3C  61  90  00  3C  86  A2  00  3C  AE  DA  --  07B6B0
00  3C  51  18  00  3C  51  14  00  3C  51  10  3F  F0  00  00  --  07B6C0
00  3C  6E  86  00  3C  59  28  00  3C  50  EA  00  3C  51  1C  --  07B6D0
00  3C  61  2E  00  3C  61  2A  00  3C  61  28  00  3C  50  E6  --  07B6E0
00  3C  90  C2  00  3C  51  00  00  3C  51  0C  00  3C  61  2C  --  07B6F0
00  3C  61  60  00  3C  61  5E  00  3C  61  5C  00  3C  91  14  --  07B700
00  24  4D  5C  00  6C  29  F6  00  3C  50  EC  00  3C  61  62  --  07B710
57  56  00  3C  50  E8  00  3C  61  96  00  02  00  3C  61  94  --  07B720
9B  F8  56  D9  9B  E8  56  D9  9B  EE  D9  9B  00  00  20  C8  --  07B730
DC  9B  52  45  D9  9B  0A  7E  C5  FC  5E  D9  9B  F4  56  D9  --  07B740
45  D9  9B  0A  7E  C5  EC  5E  D9  9B  E4  56  D9  9B  0E  66  --  07B750
0A  7E  C5  F0  5E  D9  9B  E0  56  D9  9B  16  66  DC  9B  4E  --  07B760
46  D8  9B  5E  45  D9  9B  0A  7E  C5  1E  74  00  56  7D  80  --  07B770
F8  46  D8  9B  5A  45  D9  9B  0A  7E  C5  FC  5E  D9  9B  FC  --  07B780
0A  7E  C5  1E  74  00  57  7D  80  0A  7E  C5  F8  5E  D9  9B  --  07B790

9B  0A  7E  C5  EC  5E  D9  9B  EC  6E  D8  9B  66  45  D9  9B  --  07B7A0
7D  80  0A  7E  C5  E8  5E  D9  9B  E8  46  D8  9B  62  45  D9  --  07B7B0
9B  F4  46  D8  9B  6E  45  D9  9B  0A  7E  C5  1E  74  00  58  --  07B7C0
D9  9B  F0  6E  D8  9B  6A  45  D9  9B  0A  7E  C5  F4  5E  D9  --  07B7D0
D9  9B  0A  7E  C5  1E  74  00  59  7D  80  0A  7E  C5  F0  5E  --  07B7E0
```

546

```
45 D9 9B 0A 7E C5 E4 5E D9 9B E4 6E D8 9B 76 45 -- 07B7F0
9B FC 46 D9 9B E0 5E D9 9B E0 6E D8 9B 72 01 FE -- 07B800
D8 9B E8 46 D9 9B 2D 77 00 5C ED 94 9A EC 5E D8 -- 07B810
5E D8 9B E4 46 D9 9B 1E 77 00 5C ED 94 9A E0 5E -- 07B820
F8 5E D8 9B F0 46 D9 9B 0F 72 00 5C ED 94 9A F4 -- 07B830
80 0A 7E C5 6B EB 00 01 B8 05 73 00 5C ED 94 9A -- 07B840
7E C5 12 74 01 57 7D 80 0A 7E C5 1B 74 01 56 7D -- 07B850
45 75 01 59 7D 80 0A 7E C5 09 74 01 58 7D 80 0A -- 07B860
9B 0F 73 00 5C ED 94 9A F4 5E D8 9B EC 46 D9 9B -- 07B870
D9 9B 1E 77 00 5C ED 94 9A F0 5E D8 9B E8 46 D9 -- 07B880
46 D9 9B 14 76 00 5C ED 94 9A E4 5E D8 9B FC 46 -- 07B890
EB 00 01 B8 05 76 00 5C ED 94 9A E0 5E D8 9B F8 -- 07B8A0
02 C8 57 56 CB 5E 5F C9 9B C0 2B 02 EB C0 2B 06 -- 07B8B0
D9 9B 12 7E C5 15 D9 9B 16 7E C5 EE D9 9B 00 00 -- 07B8C0
46 FF 03 EB FE 46 89 E4 2A 06 45 8A 0E 7E C5 1D -- 07B8D0
46 6B 34 76 FE 46 3B E4 2A 30 45 8A 0E 7E C5 FE -- 07B8E0
7E C5 2A 45 D9 9B 0C 5E 8E 0A 7E 03 F8 8B 2E FE -- 07B8F0
0A 7E 03 F8 8B 2E FE 46 6B 1D D9 9B 05 D8 9B 12 -- 07B900
1D D9 9B 05 D8 9B 16 7E C5 26 45 D9 9B 0C 5E 8E -- 07B910
94 9A B7 DE 1E DC 2E 9B 05 D9 9B 12 7E C5 BC EB -- 07B920
DE 1E DC 2E 9B 05 D9 9B 16 7E C5 13 75 00 5C ED -- 07B930
9B C0 2B 02 EB 00 01 B8 05 74 00 5C ED 94 9A B7 -- 07B940
16 7E C5 EE D9 9B 00 00 02 C8 57 56 CB 5E 5F C9 -- 07B950
03 EB 00 00 FE 46 C7 1D D9 9B 12 7E C5 15 D9 9B -- 07B960
34 76 FE 46 3B E4 2A 06 45 8A 0E 7E C5 FE 46 FF -- 07B970
2A 45 D9 9B 0C 5E 8E 0A 7E 03 F8 8B 2E FE 46 6B -- 07B980
03 F8 8B 2E FE 46 6B 1D D9 9B 05 D8 9B 12 7E C5 -- 07B990
9B 05 D8 9B 16 7E C5 26 45 D9 9B 0C 5E 8E 0A 7E -- 07B9A0
B7 DE 1E DC 2E 9B 05 D9 9B 12 7E C5 BC EB 1D D9 -- 07B9B0
DC 2E 9B 05 D9 9B 16 7E C5 13 75 00 5C ED 94 9A -- 07B9C0
2B 02 EB 00 01 B8 05 74 00 5C ED 94 9A B7 DE 1E -- 07B9D0
9B 0C 7E C5 00 00 12 C8 57 56 CB 5E 5F C9 9B C0 -- 07B9E0
05 D9 9B 10 7E C5 FC 5E D9 9B F4 56 D9 9B 05 D9 -- 07B9F0
EB 00 01 EE 46 C7 F8 5E D9 9B F0 56 D9 9B 01 FE -- 07BA00
8B 00 BA E9 03 7C 0A 46 3B EE 46 8B EE 46 FF 03 -- 07BA10
9B FC 46 D9 9B 0E 5E 8E 0C 7E 03 02 E7 C1 EE 7E -- 07BA20
03 02 E7 C1 EE 7E 8B 13 76 00 5C ED 94 9A 1D D8 -- 07BA30
C1 EE 7E 8B FC 5E D9 9B 05 D9 9B 0E 5E 8E 0C 7E -- 07BA40
9A 1D D8 9B F4 46 D9 9B 0E 5E 8E 0C 7E 03 02 E7 -- 07BA50
8E 0C 7E 03 02 E7 C1 EE 7E 8B 13 73 00 5C ED 94 -- 07BA60
03 02 E7 C1 EE 7E 8B F4 5E D9 9B 05 D9 9B 0E 5E -- 07BA70
5C ED 94 9A 1D D8 9B F8 46 D9 9B 12 5E 8E 10 7E -- 07BA80
9B 12 5E 8E 10 7E 03 02 E7 C1 EE 7E 8B 13 76 00 -- 07BA90
8E 10 7E 03 02 E7 C1 EE 7E 8B F8 5E D9 9B 05 D9 -- 07BAA0
03 72 00 5C ED 94 9A 1D D8 9B F0 46 D9 9B 12 5E -- 07BAB0
9B 12 5E 8E 10 7E 03 02 E7 C1 EE 7E 8B FF 4E E9 -- 07BAC0
14 7E C5 FC 46 D9 9B FF 38 E9 F0 5E D9 9B 05 D9 -- 07BAD0
D9 9B 04 5D D9 9B 14 7E C5 F8 46 D9 9B 1D D9 9B -- 07BAE0
46 D9 9B 08 5D D9 9B 14 7E C5 F8 66 D8 9B F0 46 -- 07BAF0
5E 5F C9 9B 0C 5D D9 9B 14 7E C5 FC 66 D8 9B F4 -- 07BB00
1D D9 9B 1A 7E C5 EE D9 9B 00 00 26 C8 57 56 CB -- 07BB10
60 7C 00 FE 7E 83 FE 4E FF 03 EB 00 02 FE 46 C7 -- 07BB20
8B FC 46 FF 03 EB 00 00 FC 46 C7 00 00 FA 46 C7 -- 07BB30

76 03 02 E6 C1 46 FC 76 8B 43 7F FE 46 3B FC 46 -- 07BB40
0C 5E 8E 0A 7E 03 02 E7 C1 FC 7E 8B 0C 46 8E 0A -- 07BB50
76 FF CE 76 00 5C ED 94 9A 1C D8 26 9B 05 D9 9B -- 07BB60
B7 43 9A 0A 76 FF 0C 76 FF 0E 76 FF 10 76 FF FC -- 07BB70
97 75 00 FA 7E 83 B2 EB FA 46 89 0A C4 83 00 4C -- 07BB80
05 D9 9B 0A 7E C5 0A 76 C4 DA 5E DD 9B EE D9 9B -- 07BB90
```

```
10  76  00  5C  ED  94  9A  DA  5E  DC  9B  04  64  D8  26  9B  --  07BBA0
11  EB  04  64  D8  26  9B  05  D9  9B  0A  7E  C5  0A  76  C4  --  07BBB0
D9  9B  04  64  D8  26  9B  05  D9  9B  0A  7E  C5  0A  76  C4  --  07BBC0
7E  C5  0D  73  00  5C  ED  94  9A  B7  E6  1E  DC  2E  9B  E0  --  07BBD0
DD  9B  EE  D9  9B  1D  D9  9B  0A  7E  C5  04  45  D9  9B  0A  --  07BBE0
64  D8  26  9B  08  45  D9  9B  0A  7E  C5  0A  76  C4  DA  5E  --  07BBF0
76  C4  11  76  00  5C  ED  94  9A  DA  5E  DC  9B  0C  01  FE  --  07BC00
C4  12  EB  0C  64  D8  26  9B  08  45  D9  9B  0A  7E  C5  0A  --  07BC10
D9  9B  0C  64  D8  26  9B  08  45  D9  9B  0A  7E  C5  0A  76  --  07BC20
7E  C5  0E  73  00  5C  ED  94  9A  B7  E6  1E  DC  2E  9B  E0  --  07BC30
9B  EE  D9  9B  08  5D  D9  9B  0A  7E  C5  0C  45  D9  9B  0A  --  07BC40
D8  26  9B  08  45  D9  9B  0E  7E  C5  0E  76  C4  DA  5E  DD  --  07BC50
0E  76  C4  11  76  00  5C  ED  94  9A  DA  5E  DC  9B  04  64  --  07BC60
76  C4  12  EB  04  64  D8  26  9B  08  45  D9  9B  0E  7E  C5  --  07BC70
E0  D9  9B  04  64  D8  26  9B  08  45  D9  9B  0E  7E  C5  0E  --  07BC80
0E  7E  C5  10  73  00  5C  ED  94  9A  B7  E6  1E  DC  2E  9B  --  07BC90
EE  D9  9B  5F  EB  08  5D  D9  9B  0E  7E  C5  04  45  D9  9B  --  07BCA0
26  9B  0C  45  D9  9B  0E  7E  C5  0E  76  C4  DA  5E  DD  9B  --  07BCB0
76  C4  11  76  00  5C  ED  94  9A  DA  5E  DC  9B  04  64  D8  --  07BCC0
C4  12  EB  04  64  D8  26  9B  0C  45  D9  9B  0E  7E  C5  0E  --  07BCD0
D9  9B  04  64  D8  26  9B  0C  45  D9  9B  0E  7E  C5  0E  76  --  07BCE0
7E  C5  0E  73  00  5C  ED  94  9A  B7  E6  1E  DC  2E  9B  E0  --  07BCF0
9B  EE  D9  9B  0C  5D  D9  9B  0E  7E  C5  04  45  D9  9B  0E  --  07BD00
64  D8  26  9B  05  D9  9B  0E  7E  C5  0E  76  C4  DA  5E  DD  --  07BD10
C5  0E  76  C4  10  76  00  5C  ED  94  9A  DA  5E  DC  9B  0C  --  07BD20
C5  0E  76  C4  11  EB  0C  64  D8  26  9B  05  D9  9B  0E  7E  --  07BD30
DC  2E  9B  E0  D9  9B  0C  64  D8  26  9B  05  D9  9B  0E  7E  --  07BD40
45  D9  9B  0E  7E  C5  0F  73  00  5C  ED  94  9A  B7  E6  1E  --  07BD50
DA  5E  DD  9B  EE  D9  9B  5B  EB  1D  D9  9B  0E  7E  C5  0C  --  07BD60
DC  9B  08  64  D8  26  9B  05  D9  9B  0E  7E  C5  0E  76  C4  --  07BD70
9B  0E  7E  C5  0E  76  C4  10  76  00  5C  ED  94  9A  DA  5E  --  07BD80
9B  0E  7E  C5  0E  76  C4  11  EB  08  64  D8  26  9B  05  D9  --  07BD90
B7  E6  1E  DC  2E  9B  E0  D9  9B  08  64  D8  26  9B  05  D9  --  07BDA0
7E  C5  08  45  D9  9B  0E  7E  C5  0D  73  00  5C  ED  94  9A  --  07BDB0
D8  26  9B  05  D9  9B  0A  7E  C5  0A  76  C4  1D  D9  9B  0E  --  07BDC0
9B  0E  7E  C5  0E  76  C4  2B  75  00  5C  ED  94  9A  04  5C  --  07BDD0
00  6A  16  76  00  5C  ED  94  9A  04  5C  D8  26  9B  05  D9  --  07BDE0
4C  B7  43  9A  0A  76  FF  0C  76  FF  0E  76  FF  10  76  FF  --  07BDF0
08  45  D9  9B  0A  7E  C5  0A  76  C4  0A  C4  83  00  01  FE  --  07BE00
C5  0E  76  C4  2C  75  00  5C  ED  94  9A  0C  5C  D8  26  9B  --  07BE10
00  5C  ED  94  9A  0C  5C  D8  26  9B  08  45  D9  9B  0E  7E  --  07BE20
0A  76  FF  0C  76  FF  0E  76  FF  10  76  FF  02  6A  16  76  --  07BE30
D9  9B  0A  7E  C5  0A  76  C4  0A  C4  83  00  4C  B7  43  9A  --  07BE40
0E  7E  C5  0E  76  C4  F6  5E  D9  9B  24  D8  26  9B  04  45  --  07BE50
C5  0A  76  C4  F2  5E  D9  9B  24  D8  26  9B  04  45  D9  9B  --  07BE60
76  C4  EE  5E  D9  9B  24  D8  26  9B  08  45  D9  9B  0A  7E  --  07BE70
EA  5E  D9  9B  24  D8  26  9B  08  45  D9  9B  0E  7E  C5  0E  --  07BE80
F2  46  D9  9B  DA  5E  DD  9B  F6  4E  D8  9B  F6  46  D9  9B  --  07BE90
4E  FE  9A  00  5C  ED  99  9A  DA  46  DC  9B  F2  4E  D8  9B  --  07BEA0
4E  D8  9B  EE  46  D9  9B  E6  5E  D9  9B  08  C4  83  00  64  --  07BEB0
46  DC  9B  EA  4E  D8  9B  EA  46  D9  9B  DA  5E  DD  9B  EE  --  07BEC0
D9  9B  08  C4  83  00  64  4E  FE  9A  00  5C  ED  99  9A  DA  --  07BED0

1C  D8  26  9B  04  45  D9  9B  0E  7E  C5  0E  76  C4  E2  5E  --  07BEE0
D9  9B  16  7E  C5  E6  46  D9  9B  59  76  00  5C  ED  94  9A  --  07BEF0
9B  F2  46  D9  9B  1D  D9  9B  12  7E  C5  E2  46  D9  9B  1D  --  07BF00
9B  00  AC  E9  03  75  00  5C  ED  94  9A  B7  DE  1E  DC  2E  --  07BF10
03  75  00  5C  ED  94  9A  B7  DE  1E  DC  2E  9B  F6  46  D9  --  07BF20
00  5C  ED  99  9A  F2  76  D8  9B  F6  46  D9  9B  00  98  E9  --  07BF30
51  EB  1D  D9  9B  1A  7E  C5  08  C4  83  00  64  3E  62  9A  --  07BF40
```

548

```
7E  C5  E6  46  D9  9B  1D  D9  9B  16  7E  C5  E2  46  D9  9B  --  07BF50
94  9A  B7  DE  1E  DC  2E  9B  EA  46  D9  9B  1D  D9  9B  12  --  07BF60
9A  B7  DE  1E  DC  2E  9B  EE  46  D9  9B  56  74  00  5C  ED  --  07BF70
99  9A  EA  76  D8  9B  EE  46  D9  9B  45  74  00  5C  ED  94  --  07BF80
D9  9B  1A  7E  C5  08  C4  83  00  64  3E  62  9A  00  5C  ED  --  07BF90
DC  9B  05  D9  9B  1A  7E  C5  DA  5E  DD  9B  EE  D9  9B  1D  --  07BFA0
9B  05  D9  9B  1A  7E  C5  12  73  00  5C  ED  94  9A  DA  5E  --  07BFB0
CB  5E  5F  C9  9B  1D  D9  9B  1A  7E  C5  B7  EE  06  DC  2E  --  07BFC0
FF  0A  7E  C5  08  75  FF  0A  7E  C5  00  00  24  C8  57  56  --  07BFD0
B7  F6  36  DC  2E  9B  04  C4  83  00  64  49  4E  9A  06  75  --  07BFE0
D9  9B  50  F0  46  8D  16  50  E0  46  8D  16  DC  5E  D9  9B  --  07BFF0
9B  0A  7E  C5  0A  76  C4  00  5C  ED  99  9A  DC  46  01  FE  --  07C000
0A  76  C4  00  5C  ED  99  9A  3E  4C  D8  26  9B  12  45  D9  --  07C010
5C  ED  99  9A  3A  4C  D8  26  9B  16  45  D9  9B  0A  7E  C5  --  07C020
0A  7E  C5  00  5C  ED  99  9A  0E  45  D9  9B  0A  7E  C5  00  --  07C030
C4  83  00  4C  AC  B2  9A  00  5C  ED  99  9A  0A  45  D9  9B  --  07C040
50  E0  46  8D  16  50  00  22  05  0A  46  8B  0C  76  FF  30  --  07C050
9B  0E  C4  83  00  4C  A6  2C  9A  04  6A  50  F0  46  8D  16  --  07C060
7E  C5  0A  46  DD  9B  00  00  02  C8  57  56  CB  5E  5F  C9  --  07C070
C5  12  46  DD  9B  1D  D9  9B  32  7E  C5  0C  55  D9  9B  32  --  07C080
0A  46  DD  9B  1D  D9  9B  36  7E  C5  04  55  D9  9B  36  7E  --  07C090
D9  9B  32  7E  C5  08  55  D9  9B  32  7E  C5  1A  46  DC  9B  --  07C0A0
55  D9  9B  36  7E  C5  22  46  DC  9B  12  46  DD  9B  04  5D  --  07C0B0
1E  DC  2E  9B  2A  46  DD  9B  08  5D  D9  9B  36  7E  C5  0C  --  07C0C0
01  FE  46  C7  00  80  E9  03  75  00  5C  ED  94  9A  B7  DE  --  07C0D0
C1  FE  46  8B  70  7F  03  FE  7E  83  FE  46  FF  03  EB  00  --  07C0E0
02  E0  C1  FE  46  8B  50  52  38  56  8B  36  46  03  02  E0  --  07C0F0
9A  E0  D9  9B  2A  46  DD  9B  50  52  34  56  8B  32  46  03  --  07C100
C5  00  5C  ED  99  9A  05  D9  9B  36  7E  C5  00  5C  ED  99  --  07C110
02  E7  C1  FE  7E  8B  00  5C  ED  99  9A  05  D9  9B  32  7E  --  07C120
7E  8B  00  5C  ED  99  9A  05  D9  9B  38  5E  8E  36  7E  03  --  07C130
ED  99  9A  05  D9  9B  34  5E  8E  32  7E  03  02  E7  C1  FE  --  07C140
5E  5F  C9  9B  87  EB  30  C4  83  00  4C  B0  08  9A  00  5C  --  07C150
76  C4  EC  5E  DD  9B  EE  D9  9B  00  00  24  C8  57  56  CB  --  07C160
EC  5E  DC  9B  04  64  D8  26  9B  05  D9  9B  0A  7E  C5  0A  --  07C170
05  D9  9B  0A  7E  C5  0A  76  C4  10  76  00  5C  ED  94  9A  --  07C180
05  D9  9B  0A  7E  C5  0A  76  C4  11  EB  04  64  D8  26  9B  --  07C190
94  9A  B7  E6  1E  DC  2E  9B  E0  D9  9B  04  64  D8  26  9B  --  07C1A0
9B  08  45  D9  9B  0A  7E  C5  0A  76  C4  37  73  00  5C  ED  --  07C1B0
0A  7E  C5  0A  76  C4  11  76  00  5C  ED  94  9A  1C  D8  26  --  07C1C0
7E  C5  0A  76  C4  01  86  E9  24  D8  26  9B  08  45  D9  9B  --  07C1D0
9B  EE  D9  9B  01  75  E9  08  64  D8  26  9B  05  D9  9B  0A  --  07C1E0
64  D8  26  9B  05  D9  9B  0E  7E  C5  0E  76  C4  EC  5E  DD  --  07C1F0
76  C4  10  76  00  5C  ED  94  9A  EC  5E  DC  9B  04  01  FE  --  07C200
76  C4  11  EB  04  64  D8  26  9B  05  D9  9B  0E  7E  C5  0E  --  07C210
9B  E0  D9  9B  04  64  D8  26  9B  05  D9  9B  0E  7E  C5  0E  --  07C220
C5  0E  76  C4  37  73  00  5C  ED  94  9A  B7  E6  1E  DC  2E  --  07C230
76  00  5C  ED  94  9A  1C  D8  26  9B  08  45  D9  9B  0E  7E  --  07C240
E9  24  D8  26  9B  08  45  D9  9B  0E  7E  C5  0E  76  C4  11  --  07C250
08  64  D8  26  9B  05  D9  9B  0E  7E  C5  0E  76  C4  01  01  --  07C260
D8  26  9B  04  45  D9  9B  0A  7E  C5  0A  76  C4  00  F0  E9  --  07C270

9B  04  45  D9  9B  0E  7E  C5  0E  76  C4  EC  5E  DD  9B  24  --  07C280
D9  9B  0E  7E  C5  FC  5E  D9  9B  EC  76  DC  9B  24  D8  26  --  07C290
D8  9B  FC  46  D9  9B  DC  5E  DD  9B  08  4D  D8  9B  FC  46  --  07C2A0
C5  0A  76  C4  E4  5E  DD  9B  B7  FE  06  DC  2E  9B  FC  4E  --  07C2B0
DD  9B  24  D8  26  9B  DC  46  DC  9B  08  45  D9  9B  0A  7E  --  07C2C0
05  D8  9B  EC  4E  DC  9B  FC  46  D9  9B  0E  7E  C5  EC  5E  --  07C2D0
9B  08  45  D9  9B  0E  7E  C5  F8  5E  D9  9B  E4  76  DC  9B  --  07C2E0
9B  E4  4E  DC  9B  FC  46  D9  9B  E4  5E  DD  9B  F8  66  D8  --  07C2F0
```

```
D9  9B  EC  46  DC  9B  08  45  D9  9B  0A  7E  C5  EC  5E  DD  --  07C300
5E  DD  9B  08  65  D8  9B  F8  46  D9  9B  0E  7E  C5  F4  5E  --  07C310
DC  4E  DC  9B  08  65  D8  9B  F8  46  D9  9B  0E  7E  C5  DC  --  07C320
9B  08  65  D8  9B  F4  46  D9  9B  0A  7E  C5  E4  5E  DD  9B  --  07C330
DC  9B  08  65  D8  9B  F4  46  D9  9B  0A  7E  C5  EC  5E  DD  --  07C340
00  64  4E  FE  9A  00  5C  ED  99  9A  E4  46  DC  9B  EC  4E  --  07C350
8D  16  00  00  20  C8  57  56  CB  5E  5F  C9  9B  08  C4  83  --  07C360
5C  ED  99  9A  2A  46  DD  9B  50  F0  46  8D  16  50  E0  46  --  07C370
99  9A  1A  46  DD  9B  00  5C  ED  99  9A  22  46  DD  9B  00  --  07C380
0A  46  DD  9B  00  5C  ED  99  9A  12  46  DD  9B  00  5C  ED  --  07C390
34  76  FF  30  C4  83  00  4C  AC  B2  9A  00  5C  ED  99  9A  --  07C3A0
9A  04  6A  50  F0  46  8D  16  50  E0  46  8D  16  32  76  FF  --  07C3B0
20  C8  57  56  CB  5E  5F  C9  9B  0E  C4  83  00  4C  A6  2C  --  07C3C0
66  DC  9B  0A  46  DD  9B  E8  5E  DD  9B  EE  D9  9B  00  00  --  07C3D0
0A  46  DD  9B  0A  76  00  5C  ED  94  9A  E8  5E  DC  9B  1A  --  07C3E0
D9  9B  1A  66  DC  9B  0A  46  DD  9B  0B  EB  1A  66  DC  9B  --  07C3F0
53  73  00  5C  ED  94  9A  B7  E6  1E  DC  2E  9B  E0  01  FE  --  07C400
9B  22  66  DC  9B  12  46  DD  9B  E0  5E  DD  9B  EE  D9  9B  --  07C410
DC  9B  12  46  DD  9B  0A  76  00  5C  ED  94  9A  E0  5E  DC  --  07C420
9B  E0  D9  9B  22  66  DC  9B  12  46  DD  9B  0B  EB  22  66  --  07C430
1A  46  DD  9B  17  73  00  5C  ED  94  9A  B7  E6  1E  DC  2E  --  07C440
1D  D9  9B  36  7E  C5  22  46  DD  9B  1D  D9  9B  32  7E  C5  --  07C450
64  2E  6A  9A  00  5C  ED  99  9A  2A  46  DD  9B  00  86  E9  --  07C460
5C  ED  99  9A  2A  46  DD  9B  FC  5E  D9  9B  08  C4  83  00  --  07C470
46  DD  9B  F8  5E  D9  9B  08  C4  83  00  64  5A  DC  9A  00  --  07C480
66  DC  9B  12  46  DD  9B  F4  5E  D9  9B  1A  66  DC  9B  0A  --  07C490
5E  DD  9B  F8  4E  D8  9B  F0  46  D9  9B  F0  5E  D9  9B  22  --  07C4A0
46  DC  9B  E8  66  DC  9B  FC  4E  D8  9B  F4  46  D9  9B  E8  --  07C4B0
9B  FC  4E  D8  9B  F0  46  D9  9B  1D  D9  9B  32  7E  C5  1A  --  07C4C0
9B  E8  46  DC  9B  F8  4E  D8  9B  F4  46  D9  9B  E8  5E  DD  --  07C4D0
57  56  CB  5E  5F  C9  9B  1D  D9  9B  36  7E  C5  22  46  DC  --  07C4E0
9B  1A  46  DD  9B  F8  5E  DD  9B  EE  D9  9B  00  00  10  C8  --  07C4F0
DD  9B  0A  76  00  5C  ED  94  9A  F8  5E  DC  9B  34  66  DC  --  07C500
34  66  DC  9B  1A  46  DD  9B  0B  EB  34  66  DC  9B  1A  46  --  07C510
0C  73  00  5C  ED  94  9A  B7  E6  1E  DC  2E  9B  E0  D9  9B  --  07C520
00  22  7E  83  0C  74  00  3C  7E  83  06  75  00  22  7E  83  --  07C530
7E  83  00  AC  E9  00  01  B8  06  74  00  3C  7E  83  0C  74  --  07C540
DC  9B  34  46  DD  9B  50  75  00  3C  7E  83  56  75  00  22  --  07C550
DD  9B  0A  4E  DC  9B  1A  46  DD  9B  F0  5E  DD  9B  1A  66  --  07C560
DC  9B  F8  66  DC  9B  24  4E  DC  9B  34  46  DD  9B  F8  5E  --  07C570
1D  D9  9B  3E  7E  C5  F0  76  DC  9B  2C  66  DC  9B  12  46  --  07C580
DC  9B  34  4E  DC  9B  24  66  DC  9B  05  D9  9B  3E  7E  C5  --  07C590
22  75  01  22  7E  83  4E  EB  1D  D9  9B  42  7E  C5  2C  46  --  07C5A0
DC  9B  0A  46  DD  9B  1D  D9  9B  3E  7E  C5  0A  46  DD  9B  --  07C5B0
1D  D9  9B  42  7E  C5  2C  46  DC  9B  34  4E  DC  9B  24  66  --  07C5C0
9B  3E  7E  C5  24  46  DD  9B  20  75  01  3C  7E  83  26  EB  --  07C5D0
DC  9B  1A  4E  DC  9B  0A  66  DC  9B  24  46  DD  9B  1D  D9  --  07C5E0
56  CB  5E  5F  C9  9B  C0  2B  1D  D9  9B  42  7E  C5  12  46  --  07C5F0
05  D9  9B  0A  7E  C5  0E  76  C4  00  00  18  C8  57  01  FE  --  07C600
D9  9B  0A  7E  C5  08  76  00  5C  ED  94  9A  1C  D8  26  9B  --  07C610

0E  76  C4  F0  5E  D9  9B  05  D9  9B  0E  7E  C5  06  EB  05  --  07C620
5C  ED  94  9A  04  5C  D8  26  9B  04  45  D9  9B  0A  7E  C5  --  07C630
9B  0E  7E  C5  07  EB  04  45  D9  9B  0A  7E  C5  09  76  00  --  07C640
05  D9  9B  0E  7E  C5  0E  76  C4  F4  5E  D9  9B  04  45  D9  --  07C650
9B  0A  7E  C5  0A  76  C4  E8  5E  DD  9B  0C  44  D8  26  9B  --  07C660
00  5C  ED  94  9A  E8  5E  DC  9B  0C  44  D8  26  9B  05  D9  --  07C670
0C  44  D8  26  9B  05  D9  9B  0A  7E  C5  0A  76  C4  10  73  --  07C680
0C  44  D8  26  9B  05  D9  9B  0E  7E  C5  0E  76  C4  0E  EB  --  07C690
D9  9B  0E  7E  C5  0E  76  C4  FC  5E  D9  9B  F0  66  D8  9B  --  07C6A0
```

```
7E  C5  0A  76  C4  E8  5E  DD  9B  08  44  D8  26  9B  04  45  --  07C6B0
94  9A  E8  5E  DC  9B  08  44  D8  26  9B  04  45  D9  9B  0A  --  07C6C0
9B  04  45  D9  9B  0A  7E  C5  0A  76  C4  11  73  00  5C  ED  --  07C6D0
04  45  D9  9B  0E  7E  C5  0E  76  C4  0F  EB  08  44  D8  26  --  07C6E0
16  10  6A  F8  5E  D9  9B  F4  66  D8  9B  08  44  D8  26  9B  --  07C6F0
83  00  5C  ED  6E  9A  12  76  FF  14  76  FF  50  F0  46  8D  --  07C700
EE  D9  9B  00  00  18  C8  57  56  CB  5E  5F  C9  9B  0A  C4  --  07C710
D8  26  9B  05  D9  9B  1E  7E  C5  1E  76  C4  F0  5E  DD  9B  --  07C720
1E  76  C4  10  76  00  5C  ED  94  9A  F0  5E  DC  9B  04  64  --  07C730
1E  76  C4  11  EB  04  64  D8  26  9B  05  D9  9B  1E  7E  C5  --  07C740
2E  9B  E0  D9  9B  04  64  D8  26  9B  05  D9  9B  1E  7E  C5  --  07C750
C5  0A  46  DD  9B  19  73  00  5C  ED  94  9A  B7  E6  1E  DC  --  07C760
D9  9B  26  7E  C5  05  D9  9B  1E  7E  C5  1D  D9  9B  22  7E  --  07C770
7E  C5  1A  76  C4  F0  5E  DD  9B  EE  D9  9B  00  FE  E9  1D  --  07C780
ED  94  9A  F0  5E  DC  9B  04  64  D8  26  9B  05  D9  9B  1A  --  07C790
D8  26  9B  05  D9  9B  1A  7E  C5  1A  76  C4  10  76  00  5C  --  07C7A0
D8  26  9B  05  D9  9B  1A  7E  C5  1A  76  C4  11  EB  04  64  --  07C7B0
00  5C  ED  94  9A  B7  E6  1E  DC  2E  9B  E0  D9  9B  04  64  --  07C7C0
DD  9B  1D  D9  9B  22  7E  C5  05  D9  9B  1A  7E  C5  19  73  --  07C7D0
7E  C5  1A  76  C4  00  97  E9  1D  D9  9B  26  7E  C5  12  46  --  07C7E0
1E  76  C4  F0  5E  DD  9B  04  64  D8  26  9B  05  D9  9B  1A  --  07C7F0
76  DC  9B  04  64  D8  26  9B  05  D9  9B  1E  7E  C5  01  FE  --  07C800
9B  FC  76  D8  9B  B7  FE  06  DD  2E  9B  FC  5E  D9  9B  F0  --  07C810
C5  E8  5E  DD  9B  F8  46  D8  9B  FC  46  D9  9B  F8  5E  D9  --  07C820
1E  76  C4  F0  5E  DD  9B  0D  D8  9B  FC  46  D9  9B  1A  7E  --  07C830
24  D8  26  9B  F0  46  DC  9B  0A  4E  DC  9B  F8  46  D9  9B  --  07C840
76  C4  1D  D9  9B  22  7E  C5  E8  76  DC  9B  12  46  DC  9B  --  07C850
C4  F0  5E  DD  9B  24  D8  26  9B  05  D9  9B  22  7E  C5  1A  --  07C860
7E  C5  04  D8  26  9B  F0  4E  DC  9B  FC  46  D9  9B  1E  76  --  07C870
C5  00  00  5C  C8  57  56  CB  5E  5F  C9  9B  1D  D9  9B  26  --  07C880
B4  5E  D9  9B  B8  06  36  DC  2E  9B  4E  45  D9  9B  0A  7E  --  07C890
5E  D9  9B  B8  06  36  DC  2E  9B  52  45  D9  9B  0A  7E  C5  --  07C8A0
0A  7E  C5  01  AE  E9  03  75  00  08  7D  83  0A  7E  C5  B0  --  07C8B0
C4  83  00  64  49  4E  9A  08  75  FF  0A  7E  C5  32  75  FF  --  07C8C0
9A  EC  46  D9  9B  EC  5E  D9  9B  B7  F6  36  DC  2E  9B  04  --  07C8D0
F4  5E  D9  9B  08  C4  83  00  64  5A  DC  9A  00  5C  ED  99  --  07C8E0
C4  83  00  64  2E  6A  9A  00  5C  ED  99  9A  EC  46  D9  9B  --  07C8F0
5E  D9  9B  F4  4E  D8  9B  F4  46  D9  9B  F0  5E  D9  9B  08  --  07C900
46  D9  9B  E8  5E  D9  9B  F0  4E  D8  9B  F0  46  D9  9B  E4  --  07C910
4E  D8  9B  B4  46  D9  9B  E0  5E  D9  9B  F0  4E  D8  9B  F4  --  07C920
5E  D9  9B  B0  4E  D8  9B  B0  46  D9  9B  FC  5E  D9  9B  B4  --  07C930
46  D9  9B  A4  5E  DD  9B  E8  4E  D8  9B  F8  46  D9  9B  F8  --  07C940
FE  9A  00  5C  ED  99  9A  A4  46  DC  9B  E4  4E  D8  9B  FC  --  07C950
D8  9B  FC  46  D9  9B  DC  5E  D9  9B  08  C4  83  00  64  4E  --  07C960
7E  C5  D8  5E  D9  9B  DC  76  D8  9B  E0  4E  D8  9B  F8  66  --  07C970
0A  7E  C5  C8  5E  D9  9B  D8  46  D8  9B  46  45  D9  9B  0A  --  07C980
9B  0A  7E  C5  B8  5E  D9  9B  DC  46  D8  9B  4A  45  D9  9B  --  07C990
D9  9B  0A  7E  C5  CC  5E  D9  9B  D8  66  D8  9B  46  45  D9  --  07C9A0
D9  9B  FC  46  D9  9B  BC  5E  D9  9B  DC  66  D8  9B  4A  45  --  07C9B0

D9  9B  AC  46  D9  9B  FC  5E  D9  9B  F8  46  D9  9B  AC  5E  --  07C9C0
D9  9B  A4  5E  DD  9B  E8  4E  D8  9B  F8  46  D9  9B  F8  5E  --  07C9D0
9A  00  5C  ED  99  9A  A4  46  DC  9B  E4  4E  D8  9B  FC  46  --  07C9E0
9B  FC  46  D9  9B  DC  5E  D9  9B  08  C4  83  00  64  4E  FE  --  07C9F0
5E  D9  9B  DC  76  D8  9B  E0  4E  D8  9B  F8  66  D8  01  FE  --  07CA00
D0  5E  D9  9B  DC  46  D8  9B  46  45  D9  9B  0A  7E  C5  D8  --  07CA10
C5  C0  5E  D9  9B  D8  46  D8  9B  4A  45  D9  9B  0A  7E  C5  --  07CA20
7E  C5  D4  5E  D9  9B  DC  66  D8  9B  46  45  D9  9B  0A  7E  --  07CA30
0C  76  FF  C4  5E  D9  9B  D8  66  D8  9B  4A  45  D9  9B  0A  --  07CA40
C8  46  8D  16  50  B8  46  8D  16  50  00  34  05  0A  46  8B  --  07CA50
```

```
0A 7E C5 40 EB 0E C4 83 00 4C A6 2C 9A 04 6A 50 -- 07CA60
C5 34 5D D9 9B 0A 7E C5 B4 66 D8 9B 46 45 D9 9B -- 07CA70
5D D9 9B 0A 7E C5 B0 66 D8 9B 4A 45 D9 9B 0A 7E -- 07CA80
C5 40 5D D9 9B 0A 7E C5 4E 45 D9 9B 0A 7E C5 38 -- 07CA90
5F C9 9B 3C 5D D9 9B 0A 7E C5 52 45 D9 9B 0A 7E -- 07CAA0
FC 46 C7 00 00 FE 46 C7 00 00 04 C8 57 56 CB 5E -- 07CAB0
0E 75 00 3D 80 0C 5E 8E 0A 7E 03 FE 7E 8B 00 00 -- 07CAC0
7E 8B 2D EB 00 05 C6 0C 5E 8E 0A 7E 03 FC 7E 8B -- 07CAD0
03 FE 7E 8B 1A 74 20 3D 80 0C 5E 8E 0A 7E 03 FE -- 07CAE0
7E 03 FC 46 FF FC 7E 8B 98 05 8A 0C 5E 8E 0A 7E -- 07CAF0
56 CB 5E 5F C9 B7 EB FE 46 FF 05 88 0C 5E 8E 0A -- 07CB00
5E 8E 0A 7E 03 02 E7 C1 12 7E 8B 00 00 04 C8 57 -- 07CB10
03 02 E7 C1 47 12 7E 8B FC 5E D9 9B 05 D9 9B 0C -- 07CB20
7E 03 02 E7 C1 12 7E 8B 05 D9 9B 0C 5E 8E 0A 7E -- 07CB30
7E 03 02 E7 C1 47 12 7E 8B 1D D9 9B 0C 5E 8E 0A -- 07CB40
E7 C1 12 7E 8B 1D D9 9B FC 46 D9 9B 0C 5E 8E 0A -- 07CB50
7E 8B FC 5E D9 9B 05 D9 9B 10 5E 8E 0E 7E 03 02 -- 07CB60
7E 8B 05 D9 9B 10 5E 8E 0E 7E 03 02 E7 C1 47 12 -- 07CB70
12 7E 8B 1D D9 9B 10 5E 8E 0E 7E 03 02 E7 C1 12 -- 07CB80
D9 9B FC 46 D9 9B 10 5E 8E 0E 7E 03 02 E7 C1 47 -- 07CB90
00 00 00 00 00 00 00 CB 5E 5F C9 9B 00 01 B8 1D -- 07CBA0
1F E4 36 75 DD D3 3F 50 62 4D D2 F1 A9 FC 00 00 -- 07CBB0
00 00 00 00 00 00 40 4C A5 DC 1E 79 67 CB 3F F9 -- 07CBC0
8B EC 8B 55 57 56 40 00 00 00 00 00 00 00 3F F0 -- 07CBD0
C9 FC 36 FF 2E 57 56 05 89 C9 F6 3E C5 2E 10 46 -- 07CBE0
FE EC 9A 04 6A 12 76 FF 14 76 FF C9 FA 36 FF 2E -- 07CBF0
36 FF 2E CA 00 36 FF 2E 57 56 5E 5F 00 5C 01 FE -- 07CC00
5F 00 5C FE EC 9A 08 6A 16 76 FF 18 76 FF C9 FE -- 07CC10
CA 02 3E C5 2E CA 06 3E F7 2E 99 40 0E 46 8B 5E -- 07CC20
89 05 89 CA 08 3E C5 2E 0C 56 8B 0A 46 8B 05 89 -- 07CC30
C5 2E 10 46 8B EC 8B 55 57 56 CB 5E 5F C9 02 55 -- 07CC40
10 36 FF 2E CA 12 36 FF 2E 57 56 05 89 CA 0C 3E -- 07CC50
5E 5F 00 5C FE EC 9A 04 6A 12 76 FF 14 76 FF CA -- 07CC60
FF 18 76 FF CA 14 36 FF 2E CA 16 36 FF 2E 57 56 -- 07CC70
99 40 0E 46 8B 5E 5F 00 5C FE EC 9A 08 6A 16 76 -- 07CC80
8B 0A 46 8B 05 89 CA 18 3E C5 2E CA 06 3E F7 2E -- 07CC90
24 3E C5 2E 02 55 89 05 89 CA 1C 3E C5 2E 0C 56 -- 07CCA0
02 55 89 05 89 CA 20 3E C5 2E 02 55 8B 05 8B CA -- 07CCB0
28 3E C5 2E 10 46 8B EC 8B 55 57 56 CB 5E 5F C9 -- 07CCC0
FF CA 2C 36 FF 2E CA 2E 36 FF 2E 57 56 05 89 CA -- 07CCD0
57 56 5E 5F 00 5C FE EC 9A 04 6A 12 76 FF 14 76 -- 07CCE0
16 76 FF 18 76 FF CA 30 36 FF 2E CA 32 36 FF 2E -- 07CCF0
34 3E C5 2E 1A 46 8B 5E 5F 00 5C FE EC 9A 08 6A -- 07CD00
1E 46 8B 05 89 CA 38 3E C5 2E 1C 46 8B 05 89 CA -- 07CD10
06 3E F7 2E 99 40 0E 46 8B 05 89 CA 3C 3E C5 2E -- 07CD20
C5 2E 0C 56 8B 0A 46 8B 05 89 CA 40 3E C5 2E CA -- 07CD30
8B 55 57 56 CB 5E 5F C9 02 55 89 05 89 CA 44 3E -- 07CD40
36 FF 2E 57 56 05 89 CA 48 3E C5 2E 10 46 8B EC -- 07CD50

9A 04 6A 12 76 FF 14 76 FF CA 4C 36 FF 2E CA 4E -- 07CD60
36 FF 2E CA 52 36 FF 2E 57 56 5E 5F 00 5C FE EC -- 07CD70
5F 00 5C FE EC 9A 08 6A 16 76 FF 18 76 FF CA 50 -- 07CD80
C5 2E 1C 46 8B 05 89 CA 54 3E C5 2E 1A 46 8B 5E -- 07CD90
8B 05 89 CA 5C 3E C5 2E 1E 46 8B 05 89 CA 58 3E -- 07CDA0
F7 2E 99 40 0E 46 8B 05 89 CA 60 3E C5 2E 20 46 -- 07CDB0
0C 56 8B 0A 46 8B 05 89 CA 64 3E C5 2E CA 06 3E -- 07CDC0
57 56 CB 5E 5F C9 02 55 89 05 89 CA 68 3E C5 2E -- 07CDD0
8B CA 6C 3E C5 2E 33 7E 02 10 7E 83 00 00 90 C8 -- 07CDE0
FF 14 76 FF 16 76 FF 18 76 FF 27 75 FF FF 3D 05 -- 07CDF0
76 FF 0E 76 FF 50 00 03 2D 10 46 8B 12 76 01 FE -- 07CE00
```

```
8B 04 68 E9 10 C4 83 00 4C BE BC 9A 0A 76 FF 0C -- 07CE10
3E F7 2E 99 40 0C 46 8B DF 46 88 00 01 25 0C 46 -- 07CE20
7E C5 E0 D1 0C 6E F7 40 0C 46 8B F4 46 89 CA 06 -- 07CE30
46 89 04 C4 83 00 64 4E A1 9A 50 01 6A 05 89 12 -- 07CE40
83 00 64 59 DC 9A 02 6A 0D 75 C2 0B DC 56 89 DA -- 07CE50
9B CA 70 36 DC 2E 9B 0C 46 DF 9B 04 22 E9 02 C4 -- 07CE60
5E D9 9B CA 78 36 DC 2E 9B 0E 46 DF 9B EC 5E D9 -- 07CE70
05 8B CA 6C 3E C5 2E F8 46 89 F6 46 89 C0 2B F0 -- 07CE80
5E D9 9B EE D9 9B 03 EB 05 DF 9B 05 74 FF FF 3D -- 07CE90
9E DC 9B 88 46 D9 9B FF 70 9E DD 9B EE D9 9B 88 -- 07CEA0
9B 2D 75 02 10 7E 83 33 75 00 5C ED 94 9A FF 70 -- 07CEB0
83 00 64 5B E6 9A 00 5C ED 99 9A CA 80 06 DD 2E -- 07CEC0
5E D9 9B 84 66 D8 9B E8 D9 9B 84 5E D9 9B 08 C4 -- 07CED0
9B EE D9 9B 80 5E D9 9B 80 76 D8 9B E8 D9 9B 80 -- 07CEE0
ED 94 9A FF 70 9E DC 9B 88 46 D9 9B FF 70 9E DD -- 07CEF0
99 9A CA 88 0E DC 2E 9B 88 46 D9 9B 31 74 00 5C -- 07CF00
9B 84 5E D9 9B 08 C4 83 00 64 5B E6 9A 00 5C ED -- 07CF10
76 D8 9B E8 D9 9B 80 5E D9 9B 84 66 D8 9B E8 D9 -- 07CF20
F4 46 3B FC 46 8B 00 00 FC 46 C7 80 5E D9 9B 80 -- 07CF30
9B CA 90 06 DC 2E 9B FC 46 DF 9B 02 89 E9 03 7C -- 07CF40
DF 9B FF 70 9E DD 9B CA 98 26 DC 2E 9B EC 76 D8 -- 07CF50
26 DC 2E 9B EC 76 D8 9B CA 90 06 DC 2E 9B FC 46 -- 07CF60
90 46 89 C0 2B E4 5E D9 9B FF 70 8E DC 9B CA 98 -- 07CF70
7F F4 46 3B FA 46 89 FC 46 2B 0C 46 8B 92 46 89 -- 07CF80
3B FE 46 8B 00 00 FE 46 C7 FA 46 89 FC 46 8B 06 -- 07CF90
90 06 DC 2E 9B FE 46 DF 9B 01 80 E9 03 7C F4 46 -- 07CFA0
FF 70 9E DD 9B CA 98 26 DC 2E 9B EC 76 D8 9B CA -- 07CFB0
2E 9B EC 76 D8 9B CA 90 06 DC 2E 9B FE 46 DF 9B -- 07CFC0
46 D9 9B E8 5E D9 9B FF 70 8E DC 9B CA 98 26 DC -- 07CFD0
9E DD 9B EE D9 9B FF 7C 9E D9 9B E8 46 D8 9B E4 -- 07CFE0
00 5C ED 94 9A FF 70 9E DC 9B 88 46 D9 9B FF 70 -- 07CFF0
D9 9B CA A0 0E DC 2E 9B F0 46 D9 9B 5E 75 01 FE -- 07D000
ED 94 9A CA 98 1E DC 2E 9B FF 7C 86 D9 9B E0 5E -- 07D010
00 02 3D 10 46 8B 00 9E E9 EE D9 9B 06 76 00 5C -- 07D020
BC FA BC 6C A7 FF 2E D8 8B E0 D1 00 97 E9 03 76 -- 07D030
9B FF 7C A6 D8 9B CA 98 06 DD 2E 9B BC 83 BC 72 -- 07D040
CA 80 0E DC 2E 9B FF 7C 86 D9 9B 73 EB E0 4E D8 -- 07D050
E0 5E D9 9B CA A0 0E DC 2E 9B F0 46 D9 9B 2F EB -- 07D060
00 5C ED 94 9A CA 98 1E DC 2E 9B FF 7C 86 D9 9B -- 07D070
4E D8 9B CA 88 0E DC 2E 9B FF 7C 86 D9 9B A2 77 -- 07D080
D9 9B 08 C4 83 00 64 5B E6 9A 00 5C ED 99 9A 88 -- 07D090
78 9E D9 9B 84 66 D8 9B FF 78 86 D9 9B FF 78 9E -- 07D0A0
9B FF 78 9E D9 9B 80 4E D8 9B FF 78 86 D9 9B FF -- 07D0B0
E0 46 D9 9B E0 5E D9 9B FF 78 8E D8 9B E0 46 D9 -- 07D0C0
0A 7E 83 39 72 00 5C ED 94 9A CA 98 1E DC 2E 9B -- 07D0D0
E0 46 D9 9B F8 46 FF 21 74 06 0A 7E 83 27 74 05 -- 07D0E0
F8 7E 8B 08 C4 83 00 5C EE 14 9A 00 5C ED 99 9A -- 07D0F0

46 2B 40 FE 46 8B 05 89 DC 5E 8E DA 7E 03 E7 D1 -- 07D100
40 FE 46 8B 07 75 00 90 7E 83 0D EB 90 46 89 92 -- 07D110
83 3D 74 05 0A 7E 83 FE 75 E9 FE 46 FF 92 46 89 -- 07D120
E4 2A DF 46 8A FA 46 89 F8 46 8B 37 74 06 0A 7E -- 07D130
7E 8B F8 46 FF 21 7D 90 46 3B FE 46 8B FE 46 89 -- 07D140
F8 7E 8B 05 8B DC 5E 8E DA 7E 03 E7 D1 F8 2B FA -- 07D150
8B F8 46 FF D7 EB FE 46 FF 05 89 DA 7E 03 E7 D1 -- 07D160
8E 56 89 8C 46 89 DC 56 8B DA 46 03 E0 D1 F6 46 -- 07D170
8B F0 8B E4 2A DF 46 8A 05 88 8C 7E C5 92 46 8B -- 07D180
8A F6 46 89 F8 46 8B 01 45 88 C6 2B E0 D1 90 46 -- 07D190
94 45 89 1F 16 FD 03 E7 D1 FC 7E 8B E4 2A 01 45 -- 07D1A0
D1 FC 7E 8B 0E 75 06 0A 7E 83 06 74 05 0A 7E 83 -- 07D1B0
```

553

```
FD 6C E9 FC 46 FF 00 00 94 45 C7 1F 16 FD 03 E7 -- 07D1C0
1F 16 FD 03 E7 D1 FC 7E 8B FC 46 89 48 F4 46 8B -- 07D1D0
13 75 01 DF 7E 80 F8 46 89 48 94 45 2B F8 46 8B -- 07D1E0
48 94 45 2B 1F 16 FD 03 E7 D1 FC 7E 8B FC 4E FF -- 07D1F0
7C 00 FA 7E 83 FA 46 89 FC 46 8B F8 46 89 01 FE -- 07D200
50 52 DC 56 8B DA 46 03 E0 D1 F6 46 8B 57 56 62 -- 07D210
03 E7 D1 FA 7E 8B 50 52 DA 46 03 E0 D1 F8 46 8B -- 07D220
5F 00 5C FE EC 9A 50 E0 D1 40 94 45 8B 1F 16 FD -- 07D230
94 45 03 F6 46 8B 1F 16 FD 03 E7 D1 FA 7E 8B 5E -- 07D240
E7 D1 4F FA 7E 8B 14 7E 00 FA 7E 83 F6 46 89 40 -- 07D250
4E FF F8 46 89 48 94 45 2B F8 46 8B 1F 16 FD 03 -- 07D260
DA 46 8B 05 89 12 7E C5 E0 D1 F6 46 8B 98 EB FA -- 07D270
CB 5E 5F C9 9B 02 55 89 05 89 16 7E C5 DC 56 8B -- 07D280
8B DF 46 88 00 01 25 0C 46 8B 00 00 90 C8 57 56 -- 07D290
F4 46 DF 9B F4 46 89 CA 06 3E F7 2E 99 40 0C 46 -- 07D2A0
12 7E C5 E0 D1 0C 6E F7 40 0C 46 8B 88 5E D9 9B -- 07D2B0
DA 46 89 04 C4 83 00 64 4E A1 9A 50 01 6A 05 89 -- 07D2C0
C4 83 00 64 59 DC 9A 02 6A 0D 75 C2 0B DC 56 89 -- 07D2D0
D9 9B CA 70 36 DC 2E 9B 0C 46 DF 9B 03 34 E9 02 -- 07D2E0
F0 5E D9 9B CA 78 36 DC 2E 9B 0E 46 DF 9B EC 5E -- 07D2F0
2E 9B 2D 75 02 10 7E 83 F8 46 89 F6 46 89 C0 2B -- 07D300
C4 83 00 64 5B E6 9A 00 5C ED 99 9A CA 80 06 DD -- 07D310
80 5E D9 9B 84 66 D8 9B E8 D9 9B 84 5E D9 9B 08 -- 07D320
00 00 FC 46 C7 80 5E D9 9B 80 76 D8 9B E8 D9 9B -- 07D330
ED A7 9A 50 40 02 14 E9 03 7C F4 46 3B FC 46 8B -- 07D340
89 C0 2B E4 5E D9 9B 88 76 D8 9B 02 C4 83 00 5C -- 07D350
46 3B FA 46 89 FC 46 2B 0C 46 8B 92 46 89 90 46 -- 07D360
46 8B 00 00 FE 46 C7 FA 46 89 FC 46 8B 06 7F F4 -- 07D370
50 40 10 7D FC 46 3B 01 2F E9 03 7C F4 46 3B FE -- 07D380
D9 9B 04 EB 88 76 D8 9B 02 C4 83 00 5C ED A7 9A -- 07D390
E8 66 D8 9B CA 98 06 DD 2E 9B E8 5E D9 9B E4 46 -- 07D3A0
9B E8 66 D8 9B CA 98 06 DD 2E 9B FF 70 9E DD 9B -- 07D3B0
DC 2E 9B E8 46 D9 9B FF 7C 9E D9 9B FF 70 8E DC -- 07D3C0
9B 78 EB EE D9 9B 05 73 00 5C ED 94 9A CA A8 1E -- 07D3D0
10 46 8B E0 5E D9 9B CA A0 0E DC 2E 9B F0 46 D9 -- 07D3E0
C0 87 C0 2A A7 FF 2E D8 8B E0 D1 66 77 00 02 3D -- 07D3F0
7C A6 D8 9B CA 98 06 DD 2E 9B C0 41 C0 30 01 FE -- 07D400
0E DC 2E 9B FF 7C 86 D9 9B 42 EB E0 4E D8 9B FF -- 07D410
9B 08 C4 83 00 64 5B E6 9A 00 5C ED 99 9A CA 80 -- 07D420
9E D9 9B 84 66 D8 9B FF 78 86 D9 9B FF 78 9E D9 -- 07D430
FF 78 9E D9 9B 80 4E D8 9B FF 78 86 D9 9B FF 78 -- 07D440
46 D9 9B E0 5E D9 9B FF 78 8E D8 9B E0 46 D9 9B -- 07D450
7E 83 39 72 00 5C ED 94 9A CA 98 1E DC 2E 9B E0 -- 07D460
46 D9 9B F8 46 FF 21 74 06 0A 7E 83 27 74 05 0A -- 07D470
7E 8B 08 C4 83 00 5C EE 14 9A 00 5C ED 99 9A E0 -- 07D480
2B 40 FE 46 8B 05 89 DC 5E 8E DA 7E 03 E7 D1 F8 -- 07D490

FE 46 8B 07 75 00 90 7E 83 0D EB 90 46 89 92 46 -- 07D4A0
3D 74 05 0A 7E 83 FE C6 E9 FE 46 FF 92 46 89 40 -- 07D4B0
2A DF 46 8A FA 46 89 F8 46 8B 37 74 06 0A 7E 83 -- 07D4C0
8B F8 46 FF 21 7D 90 46 3B FE 46 8B FE 46 89 E4 -- 07D4D0
7E 8B 05 8B DC 5E 8E DA 7E 03 E7 D1 F8 2B FA 7E -- 07D4E0
F8 46 FF D7 EB FE 46 FF 05 89 DA 7E 03 E7 D1 F8 -- 07D4F0
56 89 8C 46 89 DC 56 8B DA 46 03 E0 D1 F6 46 8B -- 07D500
F0 8B E4 2A DF 46 8A 05 88 8C 7E C5 92 46 8B 8E -- 07D510
F6 46 89 F8 46 8B 01 45 88 C6 2B E0 D1 90 46 8B -- 07D520
45 89 1F 16 FD 03 E7 D1 FC 7E 8B E4 2A 01 45 8A -- 07D530
FC 7E 8B 0E 75 06 0A 7E 83 06 74 05 0A 7E 83 94 -- 07D540
E1 E9 FC 46 FF 00 00 94 45 C7 1F 16 FD 03 E7 D1 -- 07D550
16 FD 03 E7 D1 FC 7E 8B FC 46 89 48 F4 46 8B FD -- 07D560
```

554

```
75 01 DF 7E 80 F8 46 89 48 94 45 2B F8 46 8B 1F -- 07D570
94 45 2B 1F 16 FD 03 E7 D1 FC 7E 8B FC 4E FF 13 -- 07D580
62 7C 00 FA 7E 83 FA 46 89 FC 46 8B F8 46 89 48 -- 07D590
8B 50 52 DC 56 8B DA 46 03 E0 D1 F6 46 8B 57 56 -- 07D5A0
FD 03 E7 D1 FA 7E 8B 50 52 DA 46 03 E0 D1 F8 46 -- 07D5B0
5E 5F 00 5C FE EC 9A 50 E0 D1 40 94 45 8B 1F 16 -- 07D5C0
40 94 45 03 F6 46 8B 1F 16 FD 03 E7 D1 FA 7E 8B -- 07D5D0
03 E7 D1 4F FA 7E 8B 14 7E 00 FA 7E 83 F6 46 89 -- 07D5E0
FA 4E FF F8 46 89 48 94 45 2B F8 46 8B 1F 16 FD -- 07D5F0
46 8B 05 89 12 7E C5 E0 D1 F6 46 8B 98 EB 01 FE -- 07D600
5E 5F C9 9B 02 55 89 05 89 16 7E C5 DC 56 8B DA -- 07D610
74 00 3D 83 CA B0 3E C5 2E 00 00 0A C8 57 56 CB -- 07D620
01 19 E9 03 74 00 06 3D 05 8B CA B4 3E C5 2E 0F -- 07D630
83 CA BC 3E C5 2E 0A 74 00 3D 83 CA B8 3E C5 2E -- 07D640
D0 E9 03 75 00 3D 83 CA C0 3E C5 2E 1A 75 00 3D -- 07D650
1C 9A 00 C3 E9 03 75 00 3D 83 CA C4 3E C5 2E 00 -- 07D660
04 C4 83 00 64 4E A1 9A 01 00 68 01 6A 00 54 C8 -- 07D670
04 C4 83 00 4C C8 DB 9A 50 52 FE 56 89 FC 46 89 -- 07D680
2E 00 06 F6 46 C7 00 16 F8 46 C7 00 01 FA 46 C7 -- 07D690
FF FC 76 FF FE 76 FF CA CC 36 FF 2E CA CE 36 FF -- 07D6A0
6A 35 FF CA C8 3E C5 2E FA 76 FF F8 76 FF F6 76 -- 07D6B0
B0 3E C5 2E 14 C4 83 00 64 3D BA 9A 01 38 68 06 -- 07D6C0
41 74 00 3D 83 CA C0 3E C5 2E 4B 74 00 3D 83 CA -- 07D6D0
C7 00 02 FA 46 C7 37 74 00 3D 83 CA C4 3E C5 2E -- 07D6E0
76 FF CA CC 36 FF 2E CA CE 36 FF 2E 00 35 F8 46 -- 07D6F0
3E C5 2E FA 76 FF F8 76 FF F6 76 FF FC 76 FF FE -- 07D700
C4 83 00 64 3D BA 9A 01 38 68 06 6A 35 FF CA C8 -- 07D710
EB 04 C4 83 00 64 4E E3 9A FC 76 FF FE 76 FF 14 -- 07D720
6A 00 6A 00 6A CA CC 36 FF 2E CA CE 36 FF 2E 28 -- 07D730
38 68 06 6A 35 FF CA C8 3E C5 2E 00 6A 00 6A 00 -- 07D740
C8 57 56 CB 5E 5F C9 14 C4 83 00 64 3D BA 9A 01 -- 07D750
4E A1 9A 01 00 68 01 6A 00 54 C8 1C 9A 00 00 04 -- 07D760
C8 DB 9A 50 52 FE 56 89 FC 46 89 04 C4 83 00 64 -- 07D770
FF CA CC 36 FF 2E CA CE 36 FF 2E 04 C4 83 00 4C -- 07D780
C8 3E C5 2E 0A 76 FF 16 6A 06 6A FC 76 FF FE 76 -- 07D790
14 C4 83 00 64 3D BA 9A 01 38 68 06 6A 35 FF CA -- 07D7A0
0E 75 0A 0A 7E 83 00 00 02 C8 57 56 CB 5E 5F C9 -- 07D7B0
46 8B 03 BD E9 02 C4 83 00 00 00 00 9A 0A 76 FF -- 07D7C0
A7 FF 2E D8 8B E0 D1 1D 77 00 02 3D 00 14 2D 0A -- 07D7D0
C7 0D EB 00 01 FE 46 C7 C4 17 C4 10 C4 10 C4 0A -- 07D7E0
D0 3E C5 2E FE 46 89 0A 46 8B 06 EB 00 09 FE 46 -- 07D7F0
FF 2E 3C EB 00 01 05 C7 06 75 00 3D 83 CA 01 FE -- 07D800
2E 35 FF CA D4 3E C5 2E CA CC 36 FF 2E CA CE 36 FF -- 07D810
00 64 3D BA 9A 01 2D 68 02 6A 35 FF CA C8 3E C5 -- 07D820
03 3B E9 03 74 00 3D 83 CA CC 3E C5 2E 0C C4 83 -- 07D830

00 16 3D 0A 46 8B 02 C4 83 00 44 D1 01 9A 00 6A -- 07D840
C5 6D C4 84 A7 FF 2E D8 8B E0 D1 01 59 E9 03 76 -- 07D850
C5 A0 C5 A0 C5 51 C4 FE C5 6D C5 6D C5 6D C4 B2 -- 07D860
C5 D4 C5 D4 C5 D4 C5 D4 C5 D4 C5 D4 C5 D4 C4 B2 -- 07D870
F4 3E C5 2E C4 B2 C4 B2 C4 B2 C5 D4 C5 D4 C5 D4 -- 07D880
FF CA EC 3E C5 2E 35 FF CA F0 3E C5 2E 35 FF CA -- 07D890
CA E6 36 FF 2E CA E8 36 FF 2E CA EA 36 FF 2E 35 -- 07D8A0
DC 3E C5 2E 35 FF CA E0 3E C5 2E CA E4 36 FF 2E -- 07D8B0
B8 F6 9A 35 FF 02 75 FF CA D8 3E C5 2E 35 FF CA -- 07D8C0
2E 35 FF CB 04 3E C5 2E 00 D6 E9 16 C4 83 00 4C -- 07D8D0
3E C5 2E 35 FF CA FC 3E C5 2E 35 FF CB 00 3E C5 -- 07D8E0
FF 2E CA E8 36 FF 2E CA EA 36 FF 2E 35 FF CA F8 -- 07D8F0
2E 35 FF CA E0 3E C5 2E CA E4 36 FF 2E CA E6 36 -- 07D900
35 FF 02 75 FF CA D8 3E C5 2E 35 FF CA DC 3E C5 -- 07D910
```

555

```
CB  14  3E  C5  2E  00  83  E9  18  C4  83  00  4C  B9  7E  9A  --  07D920
35  FF  CB  0C  3E  C5  2E  35  FF  CB  10  3E  C5  2E  35  FF  --  07D930
E8  36  FF  2E  CA  EA  36  FF  2E  AB  EB  CB  08  3E  C5  2E  --  07D940
CA  E0  3E  C5  2E  CA  E4  36  FF  2E  CA  E6  36  FF  2E  CA  --  07D950
75  FF  CA  D8  3E  C5  2E  35  FF  CA  DC  3E  C5  2E  35  FF  --  07D960
2E  CA  EA  36  FF  2E  31  EB  00  4C  B8  0E  9A  35  FF  02  --  07D970
C5  2E  CA  E4  36  FF  2E  CA  E6  36  FF  2E  CA  E8  36  FF  --  07D980
D8  3E  C5  2E  35  FF  CA  DC  3E  C5  2E  35  FF  CA  E0  3E  --  07D990
46  8B  10  C4  83  00  4C  B8  78  9A  35  FF  02  75  FF  CA  --  07D9A0
2E  35  FF  CA  DC  3E  C5  2E  05  89  CB  18  3E  C5  2E  0A  --  07D9B0
FF  2E  CA  EE  36  FF  2E  35  FF  02  75  FF  CA  D8  3E  C5  --  07D9C0
C7  33  9A  CB  18  36  FF  2E  CB  1A  36  FF  2E  CA  EC  36  --  07D9D0
74  0A  46  3B  05  8B  CB  1C  3E  C5  2E  0E  C4  83  00  44  --  07D9E0
05  75  00  3D  83  CB  20  3E  C5  2E  05  89  0A  46  8B  54  --  07D9F0
00  00  05  C7  CB  20  3E  C5  2E  00  4C  C7  B7  9A  01  FE  --  07DA00
2E  FE  76  FF  00  6A  CA  CC  36  FF  2E  CA  CE  36  FF  2E  --  07DA10
68  04  6A  35  FF  CA  C8  3E  C5  2E  35  FF  CA  D4  3E  C5  --  07DA20
83  CA  CC  3E  C5  2E  10  C4  83  00  64  3D  BA  9A  01  2E  --  07DA30
00  00  05  C7  CA  CC  3E  C5  2E  01  36  E9  03  74  00  3D  --  07DA40
2E  D8  8B  E0  D1  00  A4  E9  03  76  00  16  3D  0A  46  8B  --  07DA50
C6  CC  C6  E2  C6  E2  C6  E2  C6  B6  C6  E2  C6  88  A7  FF  --  07DA60
C7  23  C7  23  C7  23  C7  23  C6  B6  C6  F8  C6  F8  C6  CC  --  07DA70
C6  B6  C6  B6  C7  23  C7  23  C7  23  C7  23  C7  23  C7  23  --  07DA80
2A  36  FF  2E  CA  CC  36  FF  2E  CA  CE  36  FF  2E  C6  B6  --  07DA90
36  FF  2E  CA  CE  36  FF  2E  40  EB  CA  28  36  FF  2E  CA  --  07DAA0
FF  2E  2A  EB  CA  48  36  FF  2E  CA  4A  36  FF  2E  CA  CC  --  07DAB0
36  FF  2E  C9  F8  36  FF  2E  CA  CC  36  FF  2E  CA  CE  36  --  07DAC0
FF  2E  CA  CC  36  FF  2E  CA  CE  36  FF  2E  14  EB  C9  F6  --  07DAD0
CA  C8  3E  C5  2E  FE  76  FF  CA  0C  36  FF  2E  CA  0E  36  --  07DAE0
2E  10  C4  83  00  64  3D  BA  9A  01  2F  68  04  6A  35  FF  --  07DAF0
2E  57  CA  CE  36  FF  2E  74  75  00  3D  83  CA  CC  3E  C5  --  07DB00
00  64  3D  BA  9A  01  34  68  01  6A  35  FF  CA  C8  3E  C5  --  07DB10
3D  05  8B  12  74  00  3D  83  CA  CC  3E  C5  2E  0A  C4  83  --  07DB20
9A  48  EB  50  00  6A  00  6A  00  6A  00  6A  0B  74  61  06  --  07DB30
FF  2E  41  74  00  3D  83  CB  24  3E  C5  2E  00  54  34  15  --  07DB40
2E  35  FF  CA  D4  3E  C5  2E  CA  CC  36  FF  2E  CA  CE  36  --  07DB50
00  64  3D  BA  9A  01  2C  68  02  6A  35  FF  CA  C8  3E  C5  --  07DB60
6A  00  6A  12  74  00  3D  83  CA  CC  3E  C5  2E  0C  C4  83  --  07DB70
C9  0A  C4  83  00  64  28  52  9A  35  FF  00  6A  00  6A  00  --  07DB80
3D  05  8B  CB  1C  3E  C5  2E  EC  8B  55  57  56  CB  5E  5F  --  07DB90
16  3D  0F  74  00  09  3D  14  74  00  04  3D  19  74  00  03  --  07DBA0
36  FF  2E  3A  75  00  06  3D  05  74  00  08  3D  0A  74  00  --  07DBB0
01  6A  35  FF  CA  C8  3E  C5  2E  CA  CC  36  FF  2E  CA  CE  --  07DBC0
CA  CC  3E  C5  2E  0A  C4  83  00  64  3D  BA  9A  01  30  68  --  07DBD0

9A  35  FF  00  6A  00  6A  00  6A  00  6A  12  74  00  3D  83  --  07DBE0
EC  8B  55  57  56  CB  5E  5F  C9  0A  C4  83  00  64  28  52  --  07DBF0
C8  3E  C5  2E  CA  CC  36  FF  2E  CA  CE  36  FF  2E  01  FE  --  07DC00
0A  C4  83  00  64  3D  BA  9A  01  30  68  01  6A  35  FF  CA  --  07DC10
00  6A  00  6A  00  6A  14  74  00  3D  83  CA  CC  3E  C5  2E  --  07DC20
C5  2E  0F  EB  0A  C4  83  00  64  28  52  9A  35  FF  00  6A  --  07DC30
5E  5F  C9  02  C4  83  00  4C  C3  DC  9A  35  FF  CB  1C  3E  --  07DC40
CA  CC  36  FF  2E  CA  CE  36  FF  2E  EC  8B  55  57  56  CB  --  07DC50
6A  35  FF  CA  C8  3E  C5  2E  04  6A  0A  76  FF  0A  76  FF  --  07DC60
CA  CC  3E  C5  2E  10  C4  83  00  64  3D  BA  9A  6A  6A  04  --  07DC70
36  FF  2E  EC  8B  55  57  56  CB  5E  5F  C9  05  89  05  8B  --  07DC80
FF  CB  18  3E  C5  2E  0A  76  FF  CA  CC  36  FF  2E  CA  CE  --  07DC90
3D  BA  9A  01  3D  68  03  6A  35  FF  CA  C8  3E  C5  2E  35  --  07DCA0
2E  00  00  04  C8  57  56  CB  5E  5F  C9  0E  C4  83  00  64  --  07DCB0
BC  3E  C5  2E  00  82  E9  03  75  00  3D  83  CA  B8  3E  C5  --  07DCC0
```

```
00  01  3D  05  8B  CB  28  3E  C5  2E  78  74  00  3D  83  CA  --  07DCD0
3B  FE  46  8B  CB  2C  3E  C5  2E  00  00  FE  46  C7  30  75  --  07DCE0
46  89  E4  2A  05  8A  F8  03  CB  30  3E  C5  2E  5B  7D  05  --  07DCF0
FE  46  FF  01  05  C6  0C  5E  8E  0A  7E  03  FC  7E  8B  FC  --  07DD00
46  C7  30  75  00  02  3D  05  8B  CB  28  3E  C5  2E  D5  EB  --  07DD10
2E  1F  7D  05  3B  FE  46  8B  CB  34  3E  C5  2E  00  00  FE  --  07DD20
FC  7E  8B  FC  46  89  E4  2A  05  8A  F8  03  CB  38  3E  C5  --  07DD30
C5  2E  D5  EB  FE  46  FF  01  05  C6  0C  5E  8E  0A  7E  03  --  07DD40
00  3D  83  CA  C4  3E  C5  2E  11  74  00  3D  83  CA  C0  3E  --  07DD50
7E  81  00  80  FE  46  C7  01  7E  45  C6  0A  7E  C5  07  74  --  07DD60
05  C6  0C  5E  8E  0A  7E  03  FE  7E  8B  11  7D  01  00  FE  --  07DD70
00  00  02  C8  57  56  CB  5E  5F  C9  E8  EB  FE  46  FF  01  --  07DD80
50  FE  46  89  C0  2B  CA  CC  36  FF  2E  CA  CE  36  FF  2E  --  07DD90
64  3D  BA  9A  01  41  68  02  6A  35  FF  CA  C8  3E  C5  2E  --  07DDA0
00  6A  12  74  00  3D  83  CA  CC  3E  C5  2E  0C  C4  83  00  --  07DDB0
0A  C4  83  00  64  28  52  9A  35  FF  00  6A  00  6A  00  6A  --  07DDC0
00  6C  2D  C8  00  6C  2D  C4  00  6C  2D  C2  CB  5E  5F  C9  --  07DDD0
2D  D8  00  6C  2D  D6  00  6C  2D  D2  00  02  00  6C  2D  D0  --  07DDE0
2D  EA  00  6C  2D  E6  00  6C  2D  E4  00  6C  2D  DC  00  6C  --  07DDF0
00  6C  2E  0C  00  6C  2E  0A  00  6C  30  DE  00  6C  01  FE  --  07DE00
00  6C  2E  1C  00  6C  2E  1A  00  6C  2E  18  00  6C  2E  10  --  07DE10
00  6C  2D  F0  00  6C  2D  EE  00  6C  2E  20  00  6C  2E  1E  --  07DE20
00  6C  2E  06  00  6C  2E  04  00  6C  2E  02  00  6C  2D  F4  --  07DE30
00  6C  16  46  00  6C  2D  FE  00  6C  2D  FC  00  6C  2E  08  --  07DE40
40  59  00  00  00  00  00  40  00  00  00  00  00  00  00  00  --  07DE50
BF  F0  00  00  00  00  00  00  C0  08  00  00  00  00  00  00  --  07DE60
3F  F0  00  00  00  00  00  3F  E0  00  00  00  00  00  00  00  --  07DE70
00  00  00  00  00  00  00  40  E0  00  00  00  00  00  00  00  --  07DE80
00  3C  91  14  00  3C  90  C2  00  6C  16  4C  00  6C  22  E6  --  07DE90
00  6C  2D  C0  00  3C  F5  A4  00  3C  96  D2  00  3C  96  D0  --  07DEA0
00  3C  A6  D0  00  6C  17  AE  00  6C  2D  BE  00  3C  A6  B8  --  07DEB0
00  6C  17  7C  00  6C  17  6E  00  6C  17  6A  00  6C  17  66  --  07DEC0
00  6C  17  98  00  6C  17  96  00  6C  17  80  00  6C  17  7E  --  07DED0
00  6C  17  A8  00  6C  17  A6  00  6C  17  9C  00  6C  17  9A  --  07DEE0
00  3C  A6  BC  00  6C  17  62  00  6C  17  AC  00  6C  17  AA  --  07DEF0
00  3C  B3  14  00  24  77  8E  00  6C  16  60  00  6C  33  58  --  07DF00
8B  55  57  56  00  3C  B4  2A  00  3C  B3  16  00  3C  B3  2A  --  07DF10
0A  7E  C5  09  74  FF  FF  3D  05  8B  DD  14  3E  C5  2E  EC  --  07DF20
7E  C5  40  05  8B  DD  18  3E  C5  2E  0D  EB  00  07  05  C7  --  07DF30
FE  46  C7  00  00  02  C8  57  56  CB  5E  5F  C9  05  89  0A  --  07DF40
05  C7  04  75  00  07  3D  05  8B  DD  1C  3E  C5  2E  00  00  --  07DF50
5E  5F  C9  02  C4  83  00  4C  CC  63  9A  FE  76  FF  00  08  --  07DF60
1C  3E  C5  2E  00  01  FE  46  C7  00  00  02  C8  57  56  CB  --  07DF70

9A  FE  76  FF  00  07  05  C7  04  75  00  08  3D  05  8B  DD  --  07DF80
00  02  C8  57  56  CB  5E  5F  C9  02  C4  83  00  4C  CC  63  --  07DF90
00  08  3D  05  8B  DD  1C  3E  C5  2E  00  02  FE  46  C7  00  --  07DFA0
C4  83  00  4C  CC  63  9A  FE  76  FF  00  07  05  C7  04  75  --  07DFB0
00  03  FE  46  C7  00  00  02  C8  57  56  CB  5E  5F  C9  02  --  07DFC0
00  08  05  C7  04  75  00  07  3D  05  8B  DD  1C  3E  C5  2E  --  07DFD0
56  CB  5E  5F  C9  02  C4  83  00  4C  CC  63  9A  FE  76  FF  --  07DFE0
8B  DD  1C  3E  C5  2E  00  04  FE  46  C7  00  00  02  C8  57  --  07DFF0
9A  FE  76  FF  00  07  05  C7  04  75  00  08  3D  05  01  FE  --  07E000
00  02  C8  57  56  CB  5E  5F  C9  02  C4  83  00  4C  CC  63  --  07E010
00  08  3D  05  8B  DD  1C  3E  C5  2E  00  05  FE  46  C7  00  --  07E020
C4  83  00  4C  CC  63  9A  FE  76  FF  00  07  05  C7  04  75  --  07E030
DD  18  3E  C5  2E  00  00  04  C8  57  56  CB  5E  5F  C9  02  --  07E040
C7  DD  14  3E  C5  2E  01  1E  E9  03  75  05  3B  0A  46  8B  --  07E050
3E  C5  2E  5C  74  00  3D  83  DD  20  3E  C5  2E  FF  FF  05  --  07E060
00  01  B8  03  EB  C0  2B  04  7F  00  02  3D  05  8B  DD  18  --  07E070
```

557

```
00  01  B8  03  EB  C0  2B  04  7F  02  0A  7E  83  FC  46  89  --  07E080
DD  2A  36  FF  2E  0E  75  FE  46  3B  FC  46  8B  FE  46  89  --  07E090
FF  2E  DD  2A  36  FF  2E  0C  EB  00  6A  DD  28  36  FF  2E  --  07E0A0
40  68  02  6A  35  FF  DD  24  3E  C5  2E  02  6A  DD  28  36  --  07E0B0
18  3E  C5  2E  0A  46  8B  0C  C4  83  00  64  3D  BA  9A  01  --  07E0C0
36  FF  2E  DD  38  36  FF  2E  DD  3A  36  FF  2E  05  89  DD  --  07E0D0
2E  35  FF  DD  30  3E  C5  2E  50  DD  34  36  FF  2E  DD  36  --  07E0E0
BA  10  9A  35  FF  DD  1C  3E  C5  2E  35  FF  DD  2C  3E  C5  --  07E0F0
C5  2E  11  74  C0  0B  00  4C  DC  D5  9A  10  C4  83  00  4C  --  07E100
9A  05  EB  02  C4  83  00  4C  C3  DC  9A  35  FF  DD  1C  3E  --  07E110
00  44  87  9D  9A  35  FF  DD  1C  3E  C5  2E  00  54  34  15  --  07E120
83  00  44  89  33  9A  35  FF  DD  1C  3E  C5  2E  02  C4  83  --  07E130
2A  36  FF  2E  2C  74  00  3D  83  DD  20  3E  C5  2E  02  C4  --  07E140
3E  C5  2E  35  FF  DD  40  3E  C5  2E  DD  28  36  FF  2E  DD  --  07E150
01  3F  68  03  6A  35  FF  DD  24  3E  C5  2E  35  FF  DD  3C  --  07E160
02  C8  57  56  CB  5E  5F  C9  0E  C4  83  00  64  3D  BA  9A  --  07E170
5C  ED  F9  9A  00  5C  ED  99  9A  00  5C  CC  ED  9A  00  00  --  07E180
FE  7E  83  12  7E  50  FE  7E  83  FE  46  89  08  C4  83  00  --  07E190
83  01  0C  E9  00  4C  C8  AA  9A  50  00  50  2D  0C  7D  5A  --  07E1A0
3C  2D  FE  46  8B  10  7D  50  FE  7E  83  16  7E  3C  FE  7E  --  07E1B0
7E  28  FE  7E  83  00  F3  E9  05  89  DD  44  3E  C5  2E  00  --  07E1C0
3E  C5  2E  00  28  2D  FE  46  8B  1A  7D  3C  FE  7E  83  20  --  07E1D0
EB  DD  4C  3E  C5  2E  00  28  2D  FE  46  8B  05  89  DD  48  --  07E1E0
FE  46  8B  0F  7D  28  FE  7E  83  15  7E  1E  FE  7E  83  D5  --  07E1F0
7E  83  00  AF  E9  00  4C  C8  73  9A  50  00  1E  2D  01  FE  --  07E200
04  75  00  01  3D  05  8B  DD  50  3E  C5  2E  1A  75  16  FE  --  07E210
46  8B  9A  EB  DD  50  3E  C5  2E  00  01  B8  03  EB  C0  2B  --  07E220
00  01  3D  05  7F  00  09  3D  05  89  DD  14  3E  C5  2E  FE  --  07E230
05  C7  0A  7E  C5  75  EB  00  02  05  C7  0A  7E  C5  09  7D  --  07E240
36  36  FF  2E  DD  38  36  FF  2E  DD  3A  36  FF  2E  00  01  --  07E250
3E  C5  2E  35  FF  DD  18  3E  C5  2E  DD  34  36  FF  2E  DD  --  07E260
DD  1C  3E  C5  2E  35  FF  DD  2C  3E  C5  2E  35  FF  DD  30  --  07E270
0B  00  4C  DC  D5  9A  10  C4  83  00  4C  BA  10  9A  35  FF  --  07E280
83  00  4C  C3  DC  9A  35  FF  DD  1C  3E  C5  2E  0F  74  C0  --  07E290
C4  83  00  44  87  9D  9A  35  FF  DD  1C  3E  C5  2E  02  C4  --  07E2A0
02  C4  83  00  44  89  33  9A  35  FF  DD  1C  3E  C5  2E  02  --  07E2B0
9B  00  5C  CC  ED  9A  00  00  1C  C8  57  56  CB  5E  5F  C9  --  07E2C0
08  C4  83  00  5C  ED  F9  9A  00  5C  ED  99  9A  FA  56  D9  --  07E2D0
6A  16  7E  46  FE  7E  83  06  7C  01  FE  7E  83  FE  46  89  --  07E2E0
83  00  64  28  52  9A  50  12  68  00  6A  00  6A  00  6A  00  --  07E2F0
9B  DD  54  3E  C5  2E  DD  58  36  C4  2E  01  69  E9  0A  C4  --  07E300
3E  C5  2E  07  72  00  5C  ED  94  9A  1C  D8  26  9B  05  D9  --  07E310

OD  D8  9B  FA  46  D9  9B  DD  58  3E  C5  2E  05  EB  DD  54  --  07E320
D9  9B  E4  5E  DD  9B  DD  5C  06  DF  2E  9B  F6  5E  D9  9B  --  07E330
3E  C5  2E  33  76  00  5C  ED  94  9A  E4  5E  DC  9B  F6  46  --  07E340
2E  DD  60  36  FF  2E  00  5C  ED  99  9A  05  D9  9B  DD  54  --  07E350
C4 .83  00  5C  97  5E  9A  50  EC  46  8D  16  DD  5E  36  FF  --  07E360
FF  7A  E9  50  D5  68  00  6A  01  6A  50  EC  46  8D  16  10  --  07E370
2E  00  DF  E9  03  75  05  3B  FE  46  8B  DD  2C  3E  C5  2E  --  07E380
FF  2E  DD  2A  36  FF  2E  20  74  00  3D  83  DD  20  3E  C5  --  07E390
40  68  02  6A  35  FF  DD  24  3E  C5  2E  02  6A  DD  28  36  --  07E3A0
2C  3E  C5  2E  FE  46  8B  0C  C4  83  00  64  3D  BA  9A  01  --  07E3B0
36  FF  2E  DD  38  36  FF  2E  DD  3A  36  FF  2E  05  89  DD  --  07E3C0
C5  2E  35  FF  DD  18  3E  C5  2E  DD  34  36  FF  2E  DD  36  --  07E3D0
1C  3E  C5  2E  35  FF  DD  2C  3E  C5  2E  35  FF  DD  30  3E  --  07E3E0
00  4C  DC  D5  9A  10  C4  83  00  4C  BA  10  9A  35  FF  DD  --  07E3F0
C3  DC  9A  35  FF  DD  1C  3E  C5  2E  11  74  C0  0B  01  FE  --  07E400
20  3E  C5  2E  00  54  34  15  9A  05  EB  02  C4  83  00  4C  --  07E410
DD  28  36  FF  2E  DD  2A  36  FF  2E  2C  74  00  3D  83  DD  --  07E420
```

558

```
C5 2E 35 FF DD 3C 3E C5 2E 35 FF DD 40 3E C5 2E -- 07E430
83 00 64 3D BA 9A 01 3F 68 03 6A 35 FF DD 24 3E -- 07E440
C4 83 00 44 87 9D 9A 35 FF DD 1C 3E C5 2E 0E C4 -- 07E450
02 C4 83 00 44 89 33 9A 35 FF DD 1C 3E C5 2E 02 -- 07E460
DD 1C 3E C5 2E 00 00 04 C8 57 56 CB 5E 5F C9 9B -- 07E470
5C ED 99 9A 00 5C CC ED 9A 1C 75 00 0A 3D 05 8B -- 07E480
05 89 DD 30 3E C5 2E 08 C4 83 00 5C ED F9 9A 00 -- 07E490
ED F9 9A 00 5C ED 99 9A 00 5C CC ED 9A 01 8D E9 -- 07E4A0
7E 83 06 7C 01 FE 7E 83 FE 46 89 08 C4 83 00 5C -- 07E4B0
9A 50 11 68 00 6A 00 6A 00 6A 00 6A 16 7E 64 FE -- 07E4C0
8B DD 30 3E C5 2E 01 56 E9 0A C4 83 00 64 28 52 -- 07E4D0
3D 83 DD 20 3E C5 2E 01 47 E9 03 75 05 3B FE 46 -- 07E4E0
2E 00 6A DD 28 36 FF 2E DD 2A 36 FF 2E 20 74 00 -- 07E4F0
00 64 3D BA 9A 01 40 68 02 6A 35 FF DD 24 3E C5 -- 07E500
36 FF 2E 05 89 DD 30 3E C5 2E FE 46 8B 0C C4 83 -- 07E510
34 36 FF 2E DD 36 36 FF 2E DD 38 36 FF 2E DD 3A -- 07E520
2E 35 FF DD 30 3E C5 2E 35 FF DD 18 3E C5 2E DD -- 07E530
BA 10 9A 35 FF DD 1C 3E C5 2E 35 FF DD 2C 3E C5 -- 07E540
75 00 05 3D 05 8B DD 1C 3E C5 2E 10 C4 83 00 4C -- 07E550
00 5C ED 99 9A DD 62 36 DC 2E 9B FE 46 DF 9B 5C -- 07E560
7E 0E FC 7E 83 FC 46 89 08 C4 83 00 5C ED F9 9A -- 07E570
89 FC 46 8B 03 EB 00 1D B8 05 75 1E FC 7E 83 26 -- 07E580
C5 2E 00 0E 2D 00 01 05 C7 DD 6A 3E C5 2E FC 46 -- 07E590
3E C5 2E FC 46 2B 00 0F B8 16 EB 05 89 DD 6E 3E -- 07E5A0
DC D5 9A 00 01 05 C7 DD 6E 3E C5 2E 05 89 DD 6A -- 07E5B0
C3 DC 9A 35 FF DD 1C 3E C5 2E 11 74 C0 0B 00 4C -- 07E5C0
20 3E C5 2E 00 54 34 15 9A 05 EB 02 C4 83 00 4C -- 07E5D0
DD 28 36 FF 2E DD 2A 36 FF 2E 2C 74 00 3D 83 DD -- 07E5E0
C5 2E 35 FF DD 3C 3E C5 2E 35 FF DD 40 3E C5 2E -- 07E5F0
64 3D BA 9A 01 3F 68 03 6A 35 FF DD 24 3E 01 FE -- 07E600
00 44 87 9D 9A 35 FF DD 1C 3E C5 2E 0E C4 83 00 -- 07E610
83 00 44 89 33 9A 35 FF DD 1C 3E C5 2E 02 C4 83 -- 07E620
3E C5 2E 00 00 0A C8 57 56 CB 5E 5F C9 9B 02 C4 -- 07E630
FC 46 C7 4F 75 00 F6 7E 83 F6 46 89 05 8B DD 1C -- 07E640
03 2E 02 E7 C1 FC 7E 8B 36 7D 04 FC 7E 83 00 00 -- 07E650
00 5C ED 99 9A 05 D9 9B DD 78 1E 8E 2E DD 76 3E -- 07E660
3E 03 2E E7 D1 FC 7E 8B 08 C4 83 00 5C ED F9 9A -- 07E670
76 FF C4 EB FC 46 FF 05 89 DD 74 1E 8E 2E DD 72 -- 07E680
46 89 C0 2B 02 45 E9 02 C4 83 00 4C C3 DC 9A F6 -- 07E690
E9 03 7C 04 FC 7E 83 00 00 FC 46 C7 F8 46 89 FA -- 07E6A0
1E 8E 2E DD 76 3E 03 2E 02 E7 C1 FC 7E 8B 01 5E -- 07E6B0

83 00 5C ED F9 9A 00 5C ED 99 9A 05 D9 9B DD 78 -- 07E6C0
75 00 01 3D 05 8B DD 7A 3E C5 2E FE 46 89 08 C4 -- 07E6D0
3E F7 2E 99 00 FF FE 46 69 0D 75 04 F6 7E 83 13 -- 07E6E0
7E 83 16 74 00 3D 83 DD 7A 3E C5 2E 1D EB DD 7E -- 07E6F0
F7 99 00 FF FE 46 69 DD 80 3E C5 2E 10 75 04 F6 -- 07E700
7E 83 00 E7 E9 03 7E 00 FF FE 7E 81 FE 46 89 3D -- 07E710
12 74 02 F6 7E 83 18 74 03 F6 7E 83 1E 74 01 F6 -- 07E720
09 F6 7E 83 06 74 08 F6 7E 83 0C 74 07 F6 7E 83 -- 07E730
7E 83 16 7E 64 FE 7E 83 06 7C 9C FE 7E 83 0C 75 -- 07E740
7D 00 FE 7E 83 09 7D FF 01 FE 7E 81 07 75 04 F6 -- 07E750
8E 2E DD 72 3E 03 2E E7 D1 FC 7E 8B 00 A1 E9 03 -- 07E760
FA 46 C7 00 8D E9 03 75 05 3B FE 46 8B DD 74 1E -- 07E770
7E 8B 61 75 08 F6 7E 83 06 74 07 F6 7E 83 00 01 -- 07E780
FE 46 8B DD 74 1E 8E 2E DD 72 3E 03 2E E7 D1 FC -- 07E790
9A DD 84 36 FF 2E DD 86 36 FF 2E FC 76 FF 05 89 -- 07E7A0
74 00 3D 83 DD 20 3E C5 2E 06 C4 83 00 5C 52 A3 -- 07E7B0
DD 40 3E C5 2E DD 28 36 FF 2E DD 2A 36 FF 2E 49 -- 07E7C0
35 FF DD 24 3E C5 2E 35 FF DD 3C 3E C5 2E 35 FF -- 07E7D0
```

559

```
8B  1B  EB  0E  C4  83  00  64  3D  BA  9A  01  3F  68  03  6A  --  07E7E0
46  8B  DD  74  1E  8E  2E  DD  72  3E  03  2E  E7  D1  FC  7E  --  07E7F0
E9  FC  46  FF  00  01  F8  46  C7  05  EB  05  89  FE  01  FE  --  07E800
74  00  F8  7E  83  00  92  E9  03  74  01  FA  7E  83  FE  99  --  07E810
22  75  09  F6  7E  83  06  74  01  F6  7E  83  00  89  E9  03  --  07E820
88  3E  C5  2E  23  75  09  F6  7E  83  06  74  01  F6  7E  83  --  07E830
00  3D  83  DD  8C  3E  C5  2E  17  75  00  01  3D  05  8B  DD  --  07E840
2E  4E  EB  02  C4  83  00  4C  C3  DC  9A  F6  76  FF  0D  75  --  07E850
05  C7  DD  90  3E  C5  2E  3F  74  00  3D  83  DD  8C  3E  C5  --  07E860
36  FF  2E  02  C4  83  00  4C  C3  DC  9A  F6  76  FF  00  01  --  07E870
35  FF  DD  24  3E  C5  2E  01  6A  DD  28  36  FF  2E  DD  2A  --  07E880
3E  C5  2E  0C  C4  83  00  64  3D  BA  9A  01  39  68  02  6A  --  07E890
3E  C5  2E  00  54  34  15  9A  05  EB  00  00  05  C7  DD  90  --  07E8A0
28  36  FF  2E  DD  2A  36  FF  2E  2C  74  00  3D  83  DD  20  --  07E8B0
2E  35  FF  DD  3C  3E  C5  2E  35  FF  DD  40  3E  C5  2E  DD  --  07E8C0
00  64  3D  BA  9A  01  3F  68  03  6A  35  FF  DD  24  3E  C5  --  07E8D0
46  C7  00  00  02  C8  57  56  CB  5E  5F  C9  9B  0E  C4  83  --  07E8E0
5F  C9  02  C4  83  00  4C  D5  79  9A  FE  76  FF  00  00  FE  --  07E8F0
FE  76  FF  00  01  FE  46  C7  00  00  02  C8  57  56  CB  5E  --  07E900
02  C8  57  56  CB  5E  5F  C9  02  C4  83  00  4C  D5  79  9A  --  07E910
83  00  4C  D5  79  9A  FE  76  FF  00  02  FE  46  C7  00  00  --  07E920
03  FE  46  C7  00  00  02  C8  57  56  CB  5E  5F  C9  02  C4  --  07E930
CB  5E  5F  C9  02  C4  83  00  4C  D5  79  9A  FE  76  FF  00  --  07E940
C9  02  C4  83  00  4C  D5  79  9A  04  6A  EC  8B  55  57  56  --  07E950
05  8B  DD  1C  3E  C5  2E  00  00  0E  C8  57  56  CB  5E  5F  --  07E960
7E  83  F6  46  89  0A  46  8B  00  00  F4  46  C7  F2  46  89  --  07E970
ED  9A  0A  46  FF  03  EB  00  00  F6  46  C7  07  75  04  0A  --  07E980
5C  ED  F9  9A  00  5C  ED  99  9A  FA  56  D9  9B  00  5C  CC  --  07E990
75  00  3D  83  DD  7A  3E  C5  2E  FE  46  89  08  C4  83  00  --  07E9A0
FE  46  6B  0C  74  00  04  3D  05  8B  DD  1C  3E  C5  2E  18  --  07E9B0
05  8B  DD  7A  3E  C5  2E  23  EB  DD  94  3E  F7  2E  99  64  --  07E9C0
75  00  04  3D  05  8B  DD  1C  3E  C5  2E  1A  75  00  01  3D  --  07E9D0
81  FE  46  89  DD  7E  3E  F7  2E  99  00  FF  FE  46  69  0E  --  07E9E0
83  12  74  01  F2  7E  83  00  AC  E9  03  7E  00  FF  FE  7E  --  07E9F0
F2  7E  83  06  74  02  F2  7E  83  0C  74  03  F2  7E  01  FE  --  07EA00
ED  94  9A  DD  96  1E  DC  2E  9B  FE  46  DF  9B  22  75  09  --  07EA10
94  9A  DD  9E  1E  DC  2E  9B  FE  46  DF  9B  11  72  00  5C  --  07EA20
FF  01  FE  7E  81  07  75  04  F2  7E  83  13  76  00  5C  ED  --  07EA30
46  8B  F8  46  89  F6  46  8B  5F  7C  00  FE  7E  83  06  7D  --  07EA40
DD  72  3E  03  2E  E7  D1  F8  7E  8B  51  7D  0A  46  3B  F8  --  07EA50

D1  F8  7E  8B  11  74  05  3B  FE  46  8B  DD  74  1E  8E  2E  --  07EA60
F4  7E  83  00  01  F4  46  C7  05  89  DD  72  3E  03  2E  E7  --  07EA70
1C  3E  C5  2E  11  74  C0  0B  00  4C  DC  D5  9A  1F  75  01  --  07EA80
34  15  9A  05  EB  02  C4  83  00  4C  C3  DC  9A  35  FF  DD  --  07EA90
6A  C8  57  56  CB  5E  5F  C9  9B  A7  EB  F8  46  FF  00  54  --  07EAA0
C7  04  C4  83  00  5C  D0  B3  9A  50  96  46  8D  16  00  00  --  07EAB0
03  DD  A6  3E  C5  2E  76  7D  04  FA  7E  83  00  00  FA  46  --  07EAC0
45  8A  FA  7E  03  1F  16  FD  8B  1D  75  01  3D  80  FA  7E  --  07EAD0
1E  8E  2E  DD  72  3E  03  2E  E7  D1  FA  7E  8B  E4  2A  D7  --  07EAE0
8E  2E  DD  72  3E  03  2E  E7  D1  FA  7E  8B  12  EB  DD  74  --  07EAF0
C4  83  00  5C  ED  A7  9A  50  05  89  00  FF  B8  DD  74  1E  --  07EB00
78  1E  8E  2E  DD  76  3E  03  2E  02  E7  C1  FA  7E  8B  02  --  07EB10
C4  83  00  5C  EE  14  9A  00  5C  ED  99  9A  15  D9  9B  DD  --  07EB20
84  EB  FA  46  FF  FC  45  88  FA  7E  03  1F  16  FD  8B  08  --  07EB30
2E  50  FC  46  8D  16  DD  28  36  FF  2E  DD  2A  36  FF  2E  --  07EB40
D0  9A  01  97  68  06  6A  DD  AA  36  FF  2E  DD  AC  36  FF  --  07EB50
DD  1C  3E  C5  2E  00  14  DD  BA  9A  10  C4  83  00  64  40  --  07EB60
56  CB  5E  5F  C9  9B  02  C4  83  00  4C  C3  DC  9A  35  FF  --  07EB70
8B  FC  46  89  05  8B  DD  1C  3E  C5  2E  00  00  04  C8  57  --  07EB80
```

560

```
09 FC 7E 83 06 74 01 FC 7E 83 FE 46 89 48 0A 46 -- 07EB90
88 3E C5 2E 0C 74 00 3D 83 DD AE 3E C5 2E 16 75 -- 07EBA0
3D 05 8B DD 1C 3E C5 2E 0C 74 00 01 3D 05 8B DD -- 07EBB0
8B 00 01 B8 3C C5 26 DD B2 36 C4 2E 2A 75 00 15 -- 07EBC0
6A 00 6A 00 6A 00 6A 15 75 02 45 23 E0 D3 FE 4E -- 07EBD0
C5 2E 62 EB 0A C4 83 00 64 28 52 9A 50 17 68 00 -- 07EBE0
DD A6 3E 8B 2E 55 75 00 3D 80 FE 7E 03 DD A6 3E -- 07EBF0
03 DD A6 3E 8B 2E 40 E4 2A 05 8A FE 7E 03 01 FE -- 07EC00
3E C5 2E 0F 74 C0 0B 00 4C DC D5 9A 05 88 FE 7E -- 07EC10
00 FC 7E 83 02 C4 83 00 4C C3 DC 9A 35 FF DD 1C -- 07EC20
00 3D 83 DD 88 3E C5 2E 0F 75 01 FC 7E 83 10 74 -- 07EC30
C6 FE 7E 03 DD B6 3E C5 2E 00 54 34 15 9A 05 75 -- 07EC40
1C 3E C5 2E 00 00 06 C8 57 56 CB 5E 5F C9 01 05 -- 07EC50
00 00 FC 46 C7 00 00 FE 46 C7 FA 46 89 05 8B DD -- 07EC60
01 B8 DD BA 3E C5 2E 00 90 E9 03 7C 04 FC 7E 83 -- 07EC70
03 DD A6 3E C5 2E 79 74 05 23 E0 D3 FC 4E 8B 00 -- 07EC80
09 FA 7E 83 06 74 01 FA 7E 83 6D 75 00 3D 80 F9 -- 07EC90
88 3E C5 2E 0C 74 00 3D 83 DD AE 3E C5 2E 16 75 -- 07ECA0
C4 2E 2A 75 15 FA 7E 83 06 74 00 01 3D 05 8B DD -- 07ECB0
45 23 E0 D3 FC 4E 8B 00 01 B8 3C C5 26 DD B2 36 -- 07ECC0
52 9A 50 17 68 00 6A 00 6A 00 6A 00 6A 15 75 02 -- 07ECD0
FC 7E 03 DD A6 3E C5 2E 46 EB 0A C4 83 00 64 28 -- 07ECE0
FC 7E 03 DD B6 3E C5 2E 00 01 FE 46 C7 01 05 C6 -- 07ECF0
9A 1F 75 01 FE 7E 83 FF 67 E9 FC 46 FF 01 05 C6 -- 07ED00
9A 35 FF DD 1C 3E C5 2E 11 74 C0 0B 00 4C DC D5 -- 07ED10
5F C9 00 54 34 15 9A 05 EB 02 C4 83 00 4C C3 DC -- 07ED20
FE 7E 83 00 00 FE 46 C7 00 00 06 C8 57 56 CB 5E -- 07ED30
1E 8E 2E DD 72 3E 03 2E E7 D1 FE 7E 8B 20 7D 04 -- 07ED40
46 FF FA 45 88 FE 7E 03 1F 16 FD 8B 05 8B DD 74 -- 07ED50
03 DD A6 3E C5 2E FE 46 89 48 0A 46 8B DA EB FE -- 07ED60
F8 03 DD A6 3E 8B 2E 00 EA E9 03 75 00 3D 80 F8 -- 07ED70
88 FE 7E 03 DD A6 3E 8B 2E FF FF 05 E4 2A 05 8A -- 07ED80
FF DD 1C 3E C5 2E 0F 74 C0 0B 00 4C DC D5 9A 05 -- 07ED90
3D 83 DD 1C 3E C5 2E 02 C4 83 00 4C C3 DC 9A 35 -- 07EDA0
83 DD 88 3E C5 2E 0F 75 00 01 3D 05 8B 11 74 00 -- 07EDB0
3D 83 DD 1C 3E C5 2E 00 54 34 15 9A 05 75 00 3D -- 07EDC0
1E 8E 2E DD 72 3E 03 2E E7 D1 FE 7E 8B 14 75 00 -- 07EDD0
72 3E 03 2E E7 D1 FE 7E 8B 11 EB 00 FF B8 DD 74 -- 07EDE0
00 5C ED A7 9A 50 05 89 C0 2B DD 74 1E 8E 2E DD -- 07EDF0

DD 76 3E 03 2E 02 E7 C1 FE 7E 8B 02 C4 83 01 FE -- 07EE00
EE 14 9A 00 5C ED 99 9A 15 D9 9B DD 78 1E 8E 2E -- 07EE10
2E FA 45 88 FE 7E 03 1F 16 FD 8B 08 C4 83 00 5C -- 07EE20
FF 2E 50 FA 46 8D 16 DD 28 36 FF 2E DD 2A 36 FF -- 07EE30
40 D0 9A 01 97 68 06 6A DD AA 36 FF 2E DD AC 36 -- 07EE40
03 DD B6 3E C5 2E 00 14 DD BA 9A 10 C4 83 00 64 -- 07EE50
00 00 0A C8 57 56 CB 5E 5F C9 9B 00 05 C6 FE 7E -- 07EE60
2E 06 C4 83 00 5C D0 03 9A 0A 6A 50 F6 46 8D 16 -- 07EE70
20 9A 50 F6 46 8D 16 DD BE 36 FF 2E DD C0 36 FF -- 07EE80
00 05 C7 0A 7E C5 0A 75 C0 0B 08 C4 83 00 64 5A -- 07EE90
8D 16 DD C2 36 FF 2E DD C4 36 FF 2E 00 8E E9 00 -- 07EEA0
C5 09 75 C0 0B 08 C4 83 00 64 5A 20 9A 50 F6 46 -- 07EEB0
36 FF 2E DD C8 36 FF 2E 6A EB 00 01 05 C7 0A 7E -- 07EEC0
0B 08 C4 83 00 64 5A 20 9A 50 F6 46 8D 16 DD C6 -- 07EED0
CC 36 FF 2E 46 EB 00 02 05 C7 0A 7E C5 09 75 C0 -- 07EEE0
00 64 5A 20 9A 50 F6 46 8D 16 DD CA 36 FF 2E DD -- 07EEF0
22 EB 00 03 05 C7 0A 7E C5 09 75 C0 0B 08 C4 83 -- 07EF00
9A 50 F6 46 8D 16 DD CE 36 FF 2E DD D0 36 FF 2E -- 07EF10
05 C7 0A 7E C5 07 75 C0 0B 08 C4 83 00 64 5A 20 -- 07EF20
FE 46 8D 16 00 00 02 C8 57 56 CB 5E 5F C9 00 04 -- 07EF30
```

```
76  00  04  3D  FE  46  8B  04  C4  83  00  4C  DA  7A  9A  50  --  07EF40
CO  DB  77  DB  6D  A7  FF  2E  D8  8B  EO  D1  00  D6  E9  03  --  07EF50
80  FE  7E  03  DD  A6  3E  C5  2E  DC  35  DC  OA  DB  E5  DB  --  07EF60
C4  83  00  4C  D9  44  9A  50  40  FE  46  8B  10  75  01  3D  --  07EF70
8B  OC  74  00  01  05  F7  DD  BA  3E  C5  2E  00  A6  E9  02  --  07EF80
6A  00  6A  00  6A  E3  EB  00  4C  D7  93  9A  50  40  FE  46  --  07EF90
7A  EB  OA  C4  83  00  64  28  52  9A  50  13  68  00  6A  00  --  07EFAO
3E  C5  2E  B7  74  01  3D  80  FE  7E  03  DD  A6  3E  C5  2E  --  07EFBO
00  6A  00  6A  00  6A  00  6A  C7  75  00  02  05  F7  DD  BA  --  07EFCO
01  3D  80  FE  7E  03  DD  A6  3E  C5  2E  D1  EB  50  14  68  --  07EFDO
6A  00  6A  A2  75  00  04  05  F7  DD  BA  3E  C5  2E  92  74  --  07EFEO
03  DD  A6  3E  C5  2E  AC  EB  50  16  68  00  6A  00  6A  00  --  07EFFO
BA  3E  C5  2E  FF  6A  E9  03  75  01  3D  80  FE  7E  01  FE  --  07F000
00  6A  00  6A  00  6A  FF  77  E9  03  74  00  08  05  F7  DD  --  07F010
9A  FE  76  FF  00  4C  D8  68  9A  81  EB  50  17  68  00  6A  --  07F020
CB  5E  5F  C9  05  89  OA  7E  C5  02  C4  83  00  4C  DC  75  --  07F030
00  4C  DA  7A  9A  50  FE  46  8D  16  00  00  02  C8  57  56  --  07F040
7E  C5  02  C4  83  00  4C  DC  75  9A  FE  76  FF  04  C4  83  --  07F050
OA  7E  83  00  00  04  C8  57  56  CB  5E  5F  C9  05  89  OA  --  07F060
01  7D  80  12  75  00  3D  80  DD  A6  3E  C5  2E  21  75  04  --  07F070
B8  31  74  00  03  7D  80  06  75  00  02  7D  80  OC  75  00  --  07F080
2E  FC  46  89  EO  D3  OA  4E  8B  00  01  B8  2F  EB  00  01  --  07F090
03  B8  05  75  FC  46  23  FE  46  89  05  8B  DD  BA  3E  C5  --  07F0AO
CF  75  00  3D  80  OA  7E  03  DD  A6  3E  C5  2E  10  EB  00  --  07F0BO
1C  3E  C5  2E  EC  8B  55  57  56  CB  5E  5F  C9  00  02  B8  --  07F0CO
3E  C5  2E  1D  75  00  09  3D  05  74  00  01  3D  05  8B  DD  --  07F0DO
C5  2E  11  75  00  09  3D  05  74  00  01  3D  05  8B  DD  1C  --  07F0EO
2B  02  EB  00  01  B8  05  75  00  01  3D  05  8B  DD  88  3E  --  07F0FO
17  62  00  6C  17  64  00  6C  16  46  00  CB  5E  5F  C9  CO  --  07F100
17  66  00  6C  32  C2  00  3C  F5  A4  00  6C  30  E2  00  6C  --  07F110
30  EE  00  6C  17  AE  00  3C  A6  DO  00  6C  17  68  00  6C  --  07F120
17  AO  00  6C  17  90  00  6C  17  92  00  6C  30  FO  00  6C  --  07F130
01  5E  00  6C  25  CA  00  6C  25  C6  00  6C  32  CO  00  6C  --  07F140
00  6C  17  98  40  OA  66  66  66  66  66  66  00  6C  32  9E  --  07F150
00  24  F4  8E  00  24  F4  96  00  6C  17  6E  00  6C  17  9A  --  07F160
16  48  00  3C  A6  BA  00  6C  30  DE  00  24  F5  OA  00  64  --  07F170
CO  59  00  00  00  00  00  00  FF  00  6C  17  7C  00  6C  --  07F180
00  24  F4  CB  00  6C  17  6A  40  59  00  00  00  00  00  00  --  07F190

00  3C  A7  08  00  24  F4  C6  00  3C  92  D2  00  6C  16  5E  --  07F1AO
00  6C  32  B6  00  6C  32  AF  00  6C  32  A7  00  6C  32  A2  --  07F1BO
F4  3E  C5  2E  OA  46  8B  EC  8B  55  57  56  00  6C  32  BC  --  07F1CO
3E  C5  2E  00  00  02  C8  57  56  CB  5E  5F  C9  05  89  EF  --  07F1DO
46  C7  05  EB  FE  46  89  05  8B  07  74  00  3D  83  EF  F4  --  07F1EO
04  C4  83  00  64  4E  A1  9A  FE  76  FF  04  6A  00  19  FE  --  07F1FO
76  FF  04  6A  02  55  89  05  89  EF  F8  3E  C5  2E  01  FE  --  07F200
05  89  EF  FC  3E  C5  2E  04  C4  83  00  64  4E  A1  9A  FE  --  07F210
04  C4  83  00  64  4E  A1  9A  FE  76  FF  02  6A  02  55  89  --  07F220
57  56  CB  5E  5F  C9  02  55  89  05  89  FO  00  3E  C5  2E  --  07F230
46  89  D8  F7  OA  46  8B  08  7D  00  OA  7E  83  EC  8B  55  --  07F240
26  3C  03  26  02  E7  C1  OA  7E  8B  EF  F8  36  C4  2E  OA  --  07F250
FC  36  C4  2E  00  00  02  45  C7  00  00  05  C7  02  5C  8E  --  07F260
05  C7  02  5C  8E  26  3C  03  26  02  E7  C1  OA  7E  8B  EF  --  07F270
D1  OA  7E  8B  FO  00  36  C4  2E  00  00  02  45  C7  00  00  --  07F280
CB  5E  5F  C9  00  00  05  C7  02  5C  8E  26  3C  03  26  E7  --  07F290
F7  OA  46  8B  OD  7D  00  OA  7E  83  00  00  02  C8  57  56  --  07F2AO
6E  83  00  00  FE  46  C7  05  EB  FE  46  89  OA  46  89  D8  --  07F2BO
45  8B  OE  5E  8E  OC  7E  03  02  E7  C1  FE  7E  8B  20  OC  --  07F2CO
45  8B  OC  7E  03  02  E7  C1  FE  7E  8B  11  75  05  OB  02  --  07F2DO
E7  D1  OA  7E  8B  FO  00  36  C4  2E  16  74  10  45  OB  12  --  07F2EO
```

```
EB 00 01 B8 05 75 00 3D 83 02 5C 8E 26 3C 03 26 -- 07F2F0
0A 7E 83 00 00 08 C8 57 56 CB 5E 5F C9 C0 2B 02 -- 07F300
05 EB FE 46 89 0A 46 89 D8 F7 0A 46 8B 0D 7D 00 -- 07F310
02 E7 C1 0A 7E 8B EF F8 36 C4 2E 00 00 FE 46 C7 -- 07F320
89 F8 46 89 02 55 8B 05 8B 02 5C 8E 26 3C 03 26 -- 07F330
26 3C 03 26 E7 D1 0A 7E 8B F0 00 36 C4 2E FA 56 -- 07F340
43 EB D0 8B C0 2B 06 7E 05 3B 0C 46 8B 02 5C 8E -- 07F350
FA 46 8B 24 7D 0C 46 3B FC 46 8B 00 01 FC 46 C7 -- 07F360
5E 8E F8 7E 03 02 E7 C1 FE 7E 8B E5 74 F8 46 0B -- 07F370
EB FC 46 FF FA 56 89 F8 46 89 02 55 8B 05 8B FA -- 07F380
F8 46 8B 20 F8 46 83 C1 74 F8 46 0B FA 46 8B D4 -- 07F390
00 0A 7E 83 EC 8B 55 57 56 CB 5E 5F C9 FA 56 8B -- 07F3A0
8B F0 00 36 C4 2E 0A 46 89 D8 F7 0A 46 8B 08 7D -- 07F3B0
5E 5F C9 05 8B 02 5C 8E 26 3C 03 26 E7 D1 0A 7E -- 07F3C0
6A 0F 75 0C 46 0B 0E 46 8B 00 00 06 C8 57 56 CB -- 07F3D0
7E 83 4B EB 04 C4 83 00 4C DF 13 9A 0A 76 FF 01 -- 07F3E0
EB FE 46 89 0A 46 89 D8 F7 0A 46 8B 0D 7D 00 0A -- 07F3F0
C1 FE 7E 8B 20 0C 6E 83 00 00 FE 46 C7 05 01 FE -- 07F400
FA 46 89 02 55 8B 05 8B 0E 5E 8E 0C 7E 03 02 E7 -- 07F410
EB D0 8B C0 2B 06 75 FA 46 0B FC 46 8B FC 56 89 -- 07F420
56 CB 5E 5F C9 FC 56 8B FA 46 8B 20 FA 46 83 0A -- 07F430
D8 F7 0A 46 8B 0D 7D 00 0A 7E 83 00 00 06 C8 57 -- 07F440
0E 46 8B 00 00 FE 46 C7 05 EB FE 46 89 0A 46 89 -- 07F450
8B 20 0C 6E 83 2B EB D0 8B C0 2B 06 75 0C 46 0B -- 07F460
55 8B 10 45 8B 0E 5E 8E 0C 7E 03 02 E7 C1 FE 7E -- 07F470
83 D6 74 FA 46 0B FC 46 8B FC 56 89 FA 46 89 12 -- 07F480
00 00 0C C8 57 56 CB 5E 5F C9 FA 46 8B 20 FA 46 -- 07F490
46 89 0A 46 89 D8 F7 0A 46 8B 0D 7D 00 0A 7E 83 -- 07F4A0
0A 7E 8B EF F8 36 C4 2E 00 00 F8 46 C7 05 EB F8 -- 07F4B0
89 02 55 8B 05 8B 02 5C 8E 26 3C 03 26 02 E7 C1 -- 07F4C0
7E 8B F0 00 36 C4 2E 20 0E 6E 83 FE 56 89 FC 46 -- 07F4D0
0C 46 3B 40 05 8B 02 5C 8E 26 3C 03 26 E7 D1 0A -- 07F4E0
D1 0A 7E 8B F0 00 36 C4 2E 02 16 E9 C0 2B 05 7D -- 07F4F0
03 74 0C 46 3B 40 05 8B 02 5C 8E 26 3C 03 26 E7 -- 07F500
7E 8B EF F8 36 C4 2E 68 75 01 0C 7E 83 01 2C E9 -- 07F510
56 8B 0E 46 8B 02 5C 8E 26 3C 03 26 02 E7 C1 0A -- 07F520
E7 C1 0A 7E 8B EF FC 36 C4 2E 02 55 89 05 89 10 -- 07F530

3E C5 2E 02 55 89 05 89 02 5C 8E 26 3C 03 26 02 -- 07F540
0A 76 8B F6 56 89 F4 46 89 02 55 8B 05 8B EF F8 -- 07F550
03 26 02 E7 C1 F8 7E 8B F6 46 8E F0 03 02 E6 C1 -- 07F560
EB 00 00 12 45 C7 00 00 10 45 C7 02 5C 8E 26 3C -- 07F570
56 89 F4 46 89 02 55 8B 05 8B EF FC 3E C5 2E 74 -- 07F580
C1 F8 7E 8B F6 46 8E F0 03 02 E6 C1 0A 76 8B F6 -- 07F590
89 10 56 8B 0E 46 8B 02 5C 8E 26 3C 03 26 02 E7 -- 07F5A0
26 02 E7 C1 0A 7E 8B EF FC 36 C4 2E 02 55 89 05 -- 07F5B0
E7 C1 F8 7E 8B 02 55 8B 05 8B 02 5C 8E 26 3C 03 -- 07F5C0
0A 7E 8B 12 55 89 10 45 89 10 5E 8E 0E 7E 03 02 -- 07F5D0
10 56 8B 0E 46 8B 02 5C 8E 26 3C 03 26 02 E7 C1 -- 07F5E0
89 02 55 8B 05 8B EF FC 3E C5 2E 02 55 89 05 89 -- 07F5F0
8E F0 03 02 E6 C1 0A 76 8B F6 56 89 F4 46 01 FE -- 07F600
C7 02 5C 8E 26 3C 03 26 02 E7 C1 F8 7E 8B F6 46 -- 07F610
0A 7E 8B F0 00 36 C4 2E 00 00 02 45 C7 00 00 05 -- 07F620
CE E9 00 01 B8 05 FF 02 5C 8E 26 3C 03 26 E7 D1 -- 07F630
BE E9 03 7C 0C 46 3B FA 46 8B 00 00 FA 46 C7 00 -- 07F640
F8 7E 8B 00 95 E9 03 74 FA 46 3B 48 0C 46 8B 00 -- 07F650
89 FE 56 8B FC 46 8B 10 5E 8E 0E 7E 03 02 E7 C1 -- 07F660
FE 5E 8E FC 7E 03 02 E7 C1 F8 7E 8B 02 55 89 05 -- 07F670
8E 0E 7E 03 02 E7 C1 F8 7E 8B 12 55 8B 10 45 8B -- 07F680
7E 03 02 E7 C1 F8 7E 8B 12 55 89 10 45 89 10 5E -- 07F690
```

```
12  55  89  10  45  89  10  56  8B  0E  46  8B  FE  5E  8E  FC  --  07F6A0
E7  C1  0A  7E  8B  EF  F8  36  C4  2E  14  75  00  FA  7E  83  --  07F6B0
02  E6  C1  F8  76  8B  1A  EB  02  5C  8E  26  3C  03  26  02  --  07F6C0
10  7C  03  26  02  E7  C1  F8  7E  8B  10  46  8E  0E  76  03  --  07F6D0
E9  02  55  89  05  89  10  56  8B  0E  46  8B  12  5C  8E  26  --  07F6E0
05  8B  FE  5E  8E  FC  7E  03  02  E7  C1  F8  7E  8B  FF  36  --  07F6F0
C9  FF  37  E9  FA  46  FF  FE  56  89  FC  46  89  02  55  8B  --  07F700
8B  0D  7D  00  0A  7E  83  00  00  06  C8  57  56  CB  5E  5F  --  07F710
00  FE  46  C7  05  EB  FE  46  89  0A  46  89  D8  F7  0A  46  --  07F720
8E  26  3C  03  26  E7  D1  0A  7E  8B  F0  00  36  C4  2E  00  --  07F730
C1  0A  7E  8B  EF  F8  36  C4  2E  5A  75  00  3D  83  02  5C  --  07F740
0C  46  8B  20  0C  6E  83  02  5C  8E  26  3C  03  26  02  E7  --  07F750
0A  7E  8B  EF  FC  36  C4  2E  02  55  89  05  89  0E  56  8B  --  07F760
8B  02  55  89  05  89  02  5C  8E  26  3C  03  26  02  E7  C1  --  07F770
00  00  10  45  C7  0E  5E  8E  0C  7E  03  02  E7  C1  FE  7E  --  07F780
84  E9  0C  7E  03  02  E7  C1  FE  7E  8B  00  00  12  45  C7  --  07F790
56  89  FA  46  89  02  55  8B  05  8B  EF  FC  3E  C5  2E  00  --  07F7A0
C1  FE  7E  8B  FC  46  8E  F0  03  02  E6  C1  0A  76  8B  FC  --  07F7B0
0C  46  8B  20  0C  6E  83  02  5C  8E  26  3C  03  26  02  E7  --  07F7C0
0A  7E  8B  EF  FC  36  C4  2E  02  55  89  05  89  0E  56  8B  --  07F7D0
8B  02  55  8B  05  8B  02  5C  8E  26  3C  03  26  02  E7  C1  --  07F7E0
55  89  10  45  89  0E  5E  8E  0C  7E  03  02  E7  C1  FE  7E  --  07F7F0
02  5C  8E  26  3C  03  26  02  E7  C1  0A  7E  8B  12  01  FE  --  07F800
E7  C1  FE  7E  8B  02  55  89  05  89  0E  56  8B  0C  46  8B  --  07F810
00  00  02  45  C7  00  00  05  C7  0E  5E  8E  0C  7E  03  02  --  07F820
5C  8E  26  3C  03  26  E7  D1  0A  7E  8B  F0  00  36  C4  2E  --  07F830
0A  7E  83  00  00  0A  C8  57  56  CB  5E  5F  C9  05  FF  02  --  07F840
05  EB  FA  46  89  0A  46  89  D8  F7  0A  46  8B  0D  7D  00  --  07F850
02  E7  C1  0A  7E  8B  EF  FC  36  C4  2E  00  00  FA  46  C7  --  07F860
C0  2B  07  75  05  0B  02  45  8B  02  5C  8E  26  3C  03  26  --  07F870
02  E7  C1  0A  7E  8B  EF  FC  36  C4  2E  00  CA  E9  D0  8B  --  07F880
89  FC  46  89  02  55  8B  05  8B  02  5C  8E  26  3C  03  26  --  07F890
89  F6  46  89  02  55  8B  05  8B  EF  FC  3E  C5  2E  FE  56  --  07F8A0
FA  7E  8B  F8  46  8E  F0  03  02  E6  C1  0A  76  8B  F8  56  --  07F8B0
12  55  8B  10  45  8B  02  5C  8E  26  3C  03  26  02  E7  C1  --  07F8C0
8E  26  3C  03  26  02  E7  C1  0A  7E  8B  EF  FC  36  C4  2E  --  07F8D0

3C  03  26  02  E7  C1  0A  7E  8B  02  55  89  05  89  02  5C  --  07F8E0
55  8B  05  8B  EF  FC  3E  C5  2E  20  74  05  0B  02  45  8B  --  07F8F0
8E  F0  03  02  E6  C1  0A  76  8B  F8  56  89  F6  46  89  02  --  07F900
C1  0A  7E  8B  EF  F8  36  C4  2E  08  EB  FA  7E  8B  F8  46  --  07F910
02  45  C7  00  00  05  C7  02  5C  8E  26  3C  03  26  02  E7  --  07F920
26  3C  03  26  E7  D1  0A  7E  8B  F0  00  36  C4  2E  00  00  --  07F930
C9  FE  56  8B  FC  46  8B  20  FC  46  83  0D  FF  02  5C  8E  --  07F940
8B  0D  7D  00  0A  7E  83  00  00  06  C8  57  56  CB  5E  5F  --  07F950
00  FE  46  C7  05  EB  FE  46  89  0A  46  89  D8  F7  0A  46  --  07F960
26  E7  D1  0A  7E  8B  F0  00  36  C4  2E  20  0C  6E  83  00  --  07F970
36  C4  2E  35  75  00  01  3D  05  8B  02  5C  8E  26  3C  03  --  07F980
2B  02  5C  8E  26  3C  03  26  02  E7  C1  0A  7E  8B  EF  FC  --  07F990
0A  7E  8B  EF  F8  36  C4  2E  02  45  89  05  89  D0  8B  C0  --  07F9A0
E9  02  55  89  05  89  02  5C  8E  26  3C  03  26  02  E7  C1  --  07F9B0
3C  03  26  02  E7  C1  0A  7E  8B  EF  F8  36  C4  2E  01  91  --  07F9C0
3B  7D  75  02  55  3B  0E  56  8B  0C  46  8B  02  5C  8E  26  --  07F9D0
FA  46  89  02  55  8B  05  8B  EF  F8  3E  C5  2E  79  75  05  --  07F9E0
7E  8B  FC  46  8E  F0  03  02  E6  C1  0A  76  8B  FC  56  89  --  07F9F0
8B  05  8B  02  5C  8E  26  3C  03  26  02  E7  C1  FE  01  FE  --  07FA00
3C  03  26  02  E7  C1  0A  7E  8B  EF  F8  36  C4  2E  02  55  --  07FA10
05  8B  EF  F8  3E  C5  2E  02  55  89  05  89  02  5C  8E  26  --  07FA20
03  02  E6  C1  0A  76  8B  FC  56  89  FA  46  89  02  55  8B  --  07FA30
5C  8E  26  3C  03  26  02  E7  C1  FE  7E  8B  FC  46  8E  F0  --  07FA40
```

564

```
C4 2E 00 F7 E9 00 00 12 45 C7 00 00 10 45 C7 02 -- 07FA50
02 5C 8E 26 3C 03 26 02 E7 C1 0A 7E 8B EF FC 36 -- 07FA60
2E 78 75 05 3B 7C 75 02 55 3B 0E 56 8B 0C 46 8B -- 07FA70
8B FC 56 89 FA 46 89 02 55 8B 05 8B EF FC 3E C5 -- 07FA80
02 E7 C1 FE 7E 8B FC 46 8E F0 03 02 E6 C1 0A 76 -- 07FA90
36 C4 2E 12 55 8B 10 45 8B 02 5C 8E 26 3C 03 26 -- 07FAA0
89 02 5C 8E 26 3C 03 26 02 E7 C1 0A 7E 8B EF FC -- 07FAB0
46 89 02 55 8B 05 8B EF FC 3E C5 2E 02 55 89 05 -- 07FAC0
8B FC 46 8E F0 03 02 E6 C1 0A 76 8B FC 56 89 FA -- 07FAD0
00 00 05 C7 02 5C 8E 26 3C 03 26 02 E7 C1 FE 7E -- 07FAE0
0C 7E 03 02 E7 C1 FE 7E 8B 5E EB 00 00 02 45 C7 -- 07FAF0
76 03 02 E6 C1 FE 76 8B 02 55 8B 05 8B 0E 5E 8E -- 07FB00
8E 26 10 7C 03 26 02 E7 C1 FE 7E 8B 0E 46 8E 0C -- 07FB10
0C 7E 03 02 E7 C1 FE 7E 8B 02 55 89 05 89 12 5C -- 07FB20
03 02 E6 C1 FE 76 8B 12 55 8B 10 45 8B 0E 5E 8E -- 07FB30
89 02 5C 8E 26 3C 03 26 02 E7 C1 FE 7E 8B 0C 76 -- 07FB40
26 E7 D1 0A 7E 8B F0 00 36 C4 2E 12 55 89 10 45 -- 07FB50
56 CB 5E 5F C9 00 01 B8 0D FF 02 5C 8E 26 3C 03 -- 07FB60
A1 9A 01 6A 50 00 20 05 0A 46 8B 00 00 04 C8 57 -- 07FB70
06 75 C2 0B FE 56 89 FC 46 89 04 C4 83 00 64 4E -- 07FB80
FE 56 8B FC 46 8B 20 FC 46 83 0A EB D0 8B C0 2B -- 07FB90
0C 76 FF 20 0A 6E 83 EC 8B 55 57 56 CB 5E 5F C9 -- 07FBA0
56 CB 5E 5F C9 04 C4 83 00 64 4E E3 9A 0A 76 FF -- 07FBB0
00 4C DF 13 9A 0A 76 FF 0C 76 FF 00 00 04 C8 57 -- 07FBC0
74 FC 46 0B FE 46 8B FE 56 89 FC 46 89 04 C4 83 -- 07FBD0
06 C4 83 00 4C E5 59 9A 0A 76 FF FC 76 FF 52 2C -- 07FBE0
4C E0 A4 9A 0E 76 FF 10 76 FF FC 76 FF FE 76 FF -- 07FBF0
2B 02 EB 00 01 B8 05 74 C0 0B 08 C4 83 00 01 FE -- 07FC00
08 7D 00 0A 7E 83 EC 8B 55 57 56 CB 5E 5F C9 C0 -- 07FC10
0A 7E 8B EF F8 36 C4 2E 0A 46 89 D8 F7 0A 46 8B -- 07FC20
75 05 0B 02 45 8B 02 5C 8E 26 3C 03 26 02 E7 C1 -- 07FC30
04 C8 57 56 CB 5E 5F C9 C0 2B 02 EB 00 01 B8 05 -- 07FC40
0A 46 89 D8 F7 0A 46 8B 08 7D 00 0A 7E 83 00 00 -- 07FC50
8E 26 3C 03 26 02 E7 C1 0A 7E 8B EF FC 36 C4 2E -- 07FC60
0A 76 FF FE 56 89 FC 46 89 02 55 8B 05 8B 02 5C -- 07FC70

D0 8B C0 2B 06 74 C0 0B 02 C4 83 00 4C E8 17 9A -- 07FC80
CB 5E 5F C9 FE 56 8B FC 46 8B 20 FC 46 83 0A EB -- 07FC90
50 E0 D1 05 8B EF F4 3E C5 2E 00 00 06 C8 57 56 -- 07FCA0
46 C7 FE 56 89 FC 46 89 02 C4 83 00 64 4E 56 9A -- 07FCB0
8B 12 7D 05 3B FA 46 8B EF F4 3E C5 2E 00 00 FA -- 07FCC0
EB FA 46 FF 05 89 FE 5E 8E FC 7E 03 E7 D1 FA 7E -- 07FCD0
0A 9A FC 76 FF FE 76 FF 35 FF EF F4 3E C5 2E E2 -- 07FCE0
64 4E E3 9A FC 76 FF FE 76 FF 06 C4 83 00 4C E9 -- 07FCF0
46 C7 00 00 0E C8 57 56 CB 5E 5F C9 04 C4 83 00 -- 07FD00
7E 8B 00 E4 E9 03 7C 0E 46 3B FE 46 8B 00 00 FE -- 07FD10
7E 8B 14 7D 00 3D 83 0C 5E 8E 0A 7E 03 E7 D1 FE -- 07FD20
FA 46 89 FC 46 89 D8 F7 05 8B 0A 7E 03 E7 D1 FE -- 07FD30
8E 0A 7E 03 E7 D1 FE 7E 8B 00 00 FA 46 C7 15 EB -- 07FD40
C1 FC 7E 8B EF F8 36 C4 2E FC 46 89 05 8B 0C 5E -- 07FD50
46 89 02 55 8B 05 8B 02 5C 8E 26 3C 03 26 02 E7 -- 07FD60
F6 46 0B F8 46 8B F4 56 89 F2 46 89 F8 56 89 F6 -- 07FD70
05 8B F8 5E 8E F6 7E 03 02 E7 C1 FA 7E 8B 33 74 -- 07FD80
9A F6 76 FF F8 76 FF F4 56 89 F2 46 89 02 55 8B -- 07FD90
F6 46 89 F4 56 8B F2 46 8B 04 C4 83 00 64 4E E3 -- 07FDA0
02 E7 C1 FC 7E 8B EF FC 36 C4 2E C5 EB F8 56 89 -- 07FDB0
02 45 89 05 89 D0 8B C0 2B 02 5C 8E 26 3C 03 26 -- 07FDC0
8E 26 3C 03 26 02 E7 C1 FC 7E 8B EF F8 36 C4 2E -- 07FDD0
D1 FC 7E 8B F0 00 36 C4 2E 02 55 89 05 89 02 5C -- 07FDE0
E9 FE 46 FF 00 00 05 C7 02 5C 8E 26 3C 03 26 E7 -- 07FDF0
```

```
46 8B 00 00 06 C8 57 56 CB 5E 5F C9 FF 11 01 FE -- 07FE00
76 FF 01 6A 10 76 FF 12 76 FF 16 75 0C 46 0B 0E -- 07FE10
00 0A 7E 83 00 DF E9 08 C4 83 00 4C E0 A4 9A 0A -- 07FE20
C7 05 EB FA 46 89 0A 46 89 D8 F7 0A 46 8B 0D 7D -- 07FE30
C1 FA 7E 8B 20 10 6E 83 20 0C 6E 83 00 00 FA 46 -- 07FE40
FC 46 89 02 55 8B 05 8B 0E 5E 8E 0C 7E 03 02 E7 -- 07FE50
8B 10 46 8B 0C 7E 03 02 E7 C1 FA 7E 8B FE 56 89 -- 07FE60
10 7E 03 02 E7 C1 FA 7E 8B 02 55 89 05 89 12 56 -- 07FE70
8B 12 55 89 10 45 89 0E 56 8B 0C 46 8B 12 5E 8E -- 07FE80
05 89 FE 56 8B FC 46 8B 10 7E 03 02 E7 C1 FA 7E -- 07FE90
E7 C1 FA 7E 8B 18 74 FC 46 0B FE 46 8B 02 55 89 -- 07FEA0
10 45 89 12 56 8B 10 46 8B FE 5E 8E FC 7E 03 02 -- 07FEB0
03 26 02 E7 C1 0A 7E 8B EF FC 36 C4 2E 12 55 89 -- 07FEC0
18 75 02 55 3B 0E 56 8B 0C 46 8B 02 5C 8E 26 3C -- 07FED0
10 46 8B 3C 03 26 02 E7 C1 0A 7E 8B 14 75 05 3B -- 07FEE0
0A 7E 8B F0 00 36 C4 2E 02 55 89 05 89 12 56 8B -- 07FEF0
56 CB 5E 5F C9 05 FF 02 5C 8E 26 3C 03 26 E7 D1 -- 07FF00
49 9A 0A 76 FF 0C 76 FF 0E 76 FF 00 00 04 C8 57 -- 07FF10
FF 12 76 FF FE 56 89 FC 46 89 06 C4 83 00 4C E0 -- 07FF20
C9 0A C4 83 00 4C EA 08 9A 0A 76 FF 50 52 10 76 -- 07FF30
46 8B 08 7D 00 0A 7E 83 EC 8B 55 57 56 CB 5E 5F -- 07FF40
E7 C1 0A 7E 8B EF F8 36 C4 2E 0A 46 89 D8 F7 0A -- 07FF50
0C 7E C5 02 55 8B 05 8B 02 5C 8E 26 3C 03 26 02 -- 07FF60
02 E7 C1 0A 7E 8B EF FC 36 C4 2E 02 55 89 05 89 -- 07FF70
89 0C 7E C5 02 55 8B 05 8B 02 5C 8E 26 3C 03 26 -- 07FF80
26 E7 D1 0A 7E 8B F0 00 36 C4 2E 06 55 89 04 45 -- 07FF90
5F C9 08 45 89 0C 7E C5 05 8B 02 5C 8E 26 3C 03 -- 07FFA0
0A 46 8B 08 7D 00 0A 7E 83 EC 8B 55 57 56 CB 5E -- 07FFB0
36 C4 2E 02 55 8B 05 8B 0C 7E C5 0A 46 89 D8 F7 -- 07FFC0
89 02 5C 8E 26 3C 03 26 02 E7 C1 0A 7E 8B EF F8 -- 07FFD0
36 C4 2E 06 55 8B 04 45 8B 0C 7E C5 02 55 89 05 -- 07FFE0
89 02 5C 8E 26 3C 03 26 02 E7 C1 0A 7E 8B EF FC -- 07FFF0
00 36 C4 2E 08 45 8B 0C 7E C5 02 55 89 05 01 FE -- 080000
C9 05 89 02 5C 8E 26 3C 03 26 E7 D1 0A 7E 8B F0 -- 080010

7E 83 00 01 EE 46 C7 00 00 16 C8 57 56 CB 5E 5F -- 080020
EB EA 46 89 EC 46 89 D8 F7 0A 46 8B 0D 7D 00 0A -- 080030
46 8B 08 74 0C 46 0B 0E 46 8B 00 00 EA 46 C7 05 -- 080040
56 8B 0C 46 8B 01 F4 E9 C0 2B 05 75 10 46 0B 12 -- 080050
F8 46 89 12 56 8B 10 46 8B FE 56 89 FC 46 89 0E -- 080060
F4 46 89 FE 56 8B FC 46 8B 20 FC 6E 83 FA 56 89 -- 080070
F0 46 89 FA 56 8B F8 46 8B 20 F8 6E 83 F6 56 89 -- 080080
46 3B 05 75 FA 56 3B FE 56 8B FC 46 8B F2 56 89 -- 080090
8B FE 5E 8E FC 7E 03 02 E7 C1 EA 7E 8B 1C 74 F8 -- 0800A0
83 D4 EB EE 46 FF FE 56 89 FC 46 89 02 55 8B 05 -- 0800B0
76 FF 16 76 FF 0C 76 FF 0E 76 FF 1A 75 01 EE 7E -- 0800C0
2E 01 6D E9 0A C4 83 00 4C EA 08 9A 0A 76 FF 14 -- 0800D0
02 5C 8E 26 3C 03 26 E7 D1 EC 7E 8B F0 00 36 C4 -- 0800E0
00 A0 E9 03 74 14 46 0B 16 46 8B 05 01 EE 46 8B -- 0800F0
8E 26 3C 03 26 02 E7 C1 EC 7E 8B EF F8 36 C4 2E -- 080100
EC 7E 8B FE 56 89 FC 46 89 02 55 8B 05 8B 02 5C -- 080110
55 89 05 89 F6 56 8B F4 46 8B 3C 03 26 02 E7 C1 -- 080120
FC 46 8B F2 5E 8E F0 7E 03 02 E7 C1 EA 7E 8B 02 -- 080130
1A 74 FC 46 0B FE 46 8B 02 55 89 05 89 FE 56 8B -- 080140
8B F0 46 8B FE 5E 8E FC 7E 03 02 E7 C1 EA 7E 8B -- 080150
8B EF FC 36 C4 2E 1D EB 12 55 89 10 45 89 F2 56 -- 080160
8B F0 46 8B 02 5C 8E 26 3C 03 26 02 E7 C1 EC 7E -- 080170
F4 7E 03 02 E7 C1 EA 7E 8B 02 55 89 05 89 F2 56 -- 080180
00 AC E9 00 00 12 45 C7 00 00 10 45 C7 F6 5E 8E -- 080190
16 5E 8E 14 7E 03 02 E7 C1 EA 7E 8B 20 14 6E 83 -- 0801A0
```

566

```
5E 8E FO 7E 03 02 E7 C1 EA 7E 8B 02 55 8B 05 8B -- 0801B0
8E 14 7E 03 02 E7 C1 EA 7E 8B 02 55 89 05 89 F2 -- 0801C0
EA 7E 8B 02 55 89 05 89 F6 56 8B F4 46 8B 16 5E -- 0801D0
89 16 56 8B 14 46 8B F6 5E 3E F4 7E 03 02 E7 C1 -- 0801E0
5E 8E FO 7E 03 02 E7 C1 EA 7E 8B 12 55 89 10 45 -- 0801F0
02 E6 C1 EA 76 8B 27 74 05 0B 02 45 8B F2 01 FE -- 080200
26 3C 03 26 02 E7 C1 EA 7E 8B F2 46 8E FO 76 03 -- 080210
EB 12 55 89 10 45 89 F2 56 8B FO 46 8B 02 5C 8E -- 080220
26 3C 03 26 02 E7 C1 EC 7E 8B EF FC 36 C4 2E 1D -- 080230
01 B8 02 55 89 05 89 F2 56 8B FO 46 8B 02 5C 8E -- 080240
00 01 E6 46 C7 00 00 1C C8 57 56 CB 5E 5F C9 00 -- 080250
46 89 0A 46 89 D8 F7 0A 46 8B 0D 7D 00 0A 7E 83 -- 080260
08 74 0C 46 0B 0E 46 8B 00 00 E4 46 C7 05 EB E4 -- 080270
0C 46 8B 01 67 E9 C0 2B 05 75 10 46 0B 12 46 8B -- 080280
89 12 56 8B 10 46 8B EE 56 89 EC 46 89 0E 56 8B -- 080290
89 EE 56 8B EC 46 8B 20 EC 6E 83 EA 56 89 E8 46 -- 0802A0
89 EA 56 8B E8 46 8B 20 E8 6E 83 F6 56 89 F4 46 -- 0802B0
05 75 EA 56 3B EE 56 8B EC 46 8B F2 56 89 FO 46 -- 0802C0
5E 8E EC 7E 03 02 E7 C1 E4 7E 8B 1C 74 E8 46 3B -- 0802D0
EB E6 46 FF EE 56 89 EC 46 89 02 55 8B 05 8B EE -- 0802E0
8E 26 3C 03 26 E7 D1 0A 7E 8B FO 00 36 C4 2E D4 -- 0802F0
83 3C 03 26 E7 D1 0A 7E 8B 05 29 E6 46 8B 02 5C -- 080300
F4 7E 03 02 E7 C1 E4 7E 8B 00 AB E9 03 75 00 3D -- 080310
0B FA 56 89 F8 46 89 12 55 8B 10 45 8B F6 5E 8E -- 080320
8B F2 5E 8E FO 7E 03 02 E7 C1 E4 7E 8B 25 74 C2 -- 080330
02 E7 C1 E4 7E 8B FE 56 89 FC 46 89 02 55 8B 05 -- 080340
7E 03 02 E7 C1 E4 7E 8B 29 EB FA 5E 8E F8 7E 03 -- 080350
2E FE 56 89 FC 46 89 02 55 8B 05 8B F2 5E 8E FO -- 080360
5C 8E 26 3C 03 26 02 E7 C1 0A 7E 8B EF F8 36 C4 -- 080370
7E 8B 1A 74 FC 46 0B FE 46 8B 02 55 89 05 89 02 -- 080380
FA 56 8B F8 46 8B FE 5E 8E FC 7E 03 02 E7 C1 E4 -- 080390
0A 7E 8B EF FC 36 C4 2E 4C EB 12 55 89 10 45 89 -- 0803A0
FA 56 8B F8 46 8B 02 5C 8E 26 3C 03 26 02 E7 C1 -- 0803B0

3C 03 26 02 E7 C1 0A 7E 8B EF FC 36 C4 2E 2D EB -- 0803C0
36 C4 2E 02 45 89 05 89 D0 8B C0 2B 02 5C 8E 26 -- 0803D0
89 02 5C 8E 26 3C 03 26 02 E7 C1 0A 7E 8B EF F8 -- 0803E0
00 6C 33 9E 00 6C 33 98 CB 5E 5F C9 02 55 89 05 -- 0803F0
2E EC 8B 55 57 56 00 6C 33 9A 00 6C 33 A2 01 FE -- 080400
89 FE 60 3E C5 2E CO 2B 00 01 05 C7 FE 54 3E C5 -- 080410
2E 05 89 FE 58 3E C5 2E 05 89 FE 5C 3E C5 2E 05 -- 080420
DO F8 9A 00 44 DO EA 9A 00 00 05 C7 FE 64 3E C5 -- 080430
6E 36 FF 2E 0E 75 00 3D 83 FE 68 3E C5 2E 00 44 -- 080440
2E FE 6E 36 FF 2E 0C EB 3D 6A FE 6C 36 FF 2E FE -- 080450
83 00 64 40 D0 9A 6F 6A 03 6A 03 6A FE 6C 36 FF -- 080460
DC 9A 35 FF 0D 74 00 3D 83 FE 6C 3E C5 2E 0A C4 -- 080470
05 8B FE 70 3E C5 2E 00 F7 E9 02 C4 83 00 64 59 -- 080480
9A FE 6C 36 FF 2E FE 6E 36 FF 2E 14 74 00 04 3D -- 080490
74 3E C5 2E 00 01 B8 19 EB 04 C4 83 00 4C FD EA -- 0804A0
E4 2A 01 45 88 E4 2A 02 45 88 E4 2A 03 45 88 FE -- 0804B0
FE 7C 3E C5 2E 00 00 05 C7 FE 78 3E C5 2E 05 88 -- 0804C0
3E C5 2E 02 C4 83 00 5C 57 FE 9A 00 6A 00 05 C6 -- 0804D0
FF 2E FE 8A 36 FF 2E 00 6A 27 74 00 3D 83 FE 80 -- 0804E0
94 FB 9A FE 84 36 FF 2E FE 86 36 FF 2E FE 88 36 -- 0804F0
C5 2E 00 00 05 C7 FE 80 3E C5 2E 0A C4 83 00 5C -- 080500
2E FE 92 36 FF 2E 00 6A 27 74 00 3D 83 FE 8C 3E -- 080510
FB 9A FE 84 36 FF 2E FE 86 36 FF 2E FE 90 36 FF -- 080520
9A 00 00 05 C7 FE 8C 3E C5 2E 0A C4 83 00 5C 94 -- 080530
01 6A 00 4C C9 AC 9A 00 4C FC 5B 9A 00 4C F1 7E -- 080540
46 BD 9A 00 54 47 78 9A 02 C4 83 00 44 19 4B 9A -- 080550
```

567

EP 0 533 348 A2

```
14 E7 1A 9A 00 54 3B 3B 9A 00 14 EE A2 9A 00 54 -- 080560
00 64 23 6E 9A 00 54 A0 E0 9A 00 54 36 78 9A 00 -- 080570
05 C7 FE 94 3E C5 2E EC 8B 55 57 56 CB 5E 5F C9 -- 080580
74 00 3D 83 FE 98 3E C5 2E 00 4C C7 B7 9A FF FF -- 080590
FE 6E 36 FF 2E 28 74 00 3D 83 FE 9C 3E C5 2E 32 -- 0805A0
2E 00 6A 06 6A 16 6A 00 6A 00 6A FE 6C 36 FF 2E -- 0805B0
00 64 3D BA 9A 01 38 68 06 6A 35 FF FE A0 3E C5 -- 0805C0
3E C5 2E FE 6C 36 FF 2E FE 6E 36 FF 2E 14 C4 83 -- 0805D0
01 2D 68 02 6A 35 FF FE A0 3E C5 2E 35 FF FE A4 -- 0805E0
00 3D 83 FE 6C 3E C5 2E 0C C4 83 00 64 3D BA 9A -- 0805F0
2B E9 35 FF 00 6A 00 6A 00 6A 00 6A 0D 74 01 FE -- 080600
C5 2E 00 B1 E9 03 74 00 3D 83 FE 78 3E C5 2E 01 -- 080610
FE 6E 36 FF 2E 00 A4 E9 03 74 00 3D 83 FE 58 3E -- 080620
2E FE A8 36 FF 2E FE AA 36 FF 2E FE 6C 36 FF 2E -- 080630
00 64 3D BA 9A 01 31 68 03 6A 35 FF FE A0 3E C5 -- 080640
2E 2E 74 61 03 3D 05 8B FE 6C 3E C5 2E 0E C4 83 -- 080650
3D 83 FE AC 3E C5 2E 0A 75 00 3D 83 FE A8 3E C5 -- 080660
00 A2 E9 03 74 00 3D 83 FE B0 3E C5 2E 1A 74 00 -- 080670
3E C5 2E 00 95 E9 03 74 00 3D 83 FE B4 3E C5 2E -- 080680
2E FE 6E 36 FF 2E 00 88 E9 03 74 00 3D 83 FE B8 -- 080690
BC 3E C5 2E 04 C4 83 00 64 2A BB 9A FE 6C 36 FF -- 0806A0
03 75 00 3D 83 FE C0 3E C5 2E 0D 75 00 3D 83 FE -- 0806B0
6A 75 EB 00 4C 30 34 9A 00 4C 2C 7D 9A 00 81 E9 -- 0806C0
34 9A 00 4C 2C 7D 9A 02 C4 83 00 44 D1 01 9A 01 -- 0806D0
B8 3E C5 2E 00 00 05 C7 FE 58 3E C5 2E 00 4C 30 -- 0806E0
C5 2E 05 89 FE C8 3E C5 2E C0 2B 00 00 05 C7 FE -- 0806F0
9A FE 6C 36 FF 2E FE 6E 36 FF 2E 05 89 FE C4 3E -- 080700
00 00 05 C7 FE 64 3E C5 2E 04 C4 83 00 64 2A BB -- 080710
03 3D 05 8B A3 74 00 3D 83 FE 6C 3E C5 2E 22 EB -- 080720
64 28 52 9A 50 00 6A 00 6A 00 6A 00 6A 9C 74 61 -- 080730
C8 1C 9A EC 8B 55 57 56 CB 5E 5F C9 0A C4 83 00 -- 080740
06 9A 05 75 00 14 3D 05 8B FE CC 3E C5 2E 00 54 -- 080750

89 FE C8 3E C5 2E C0 2B 00 4C F3 CF 9A 00 44 96 -- 080760
89 FE B8 3E C5 2E C0 2B 05 89 FE C4 3E C5 2E 05 -- 080770
FE DC 3E C5 2E EE D9 9B 05 89 FE 58 3E C5 2E 05 -- 080780
FE D4 3E C5 2E 15 D9 9B FE D8 3E C5 2E 15 D9 9B -- 080790
00 14 EE A2 9A 1D D9 9B FE D0 3E C5 2E 15 D9 9B -- 0807A0
83 FE E0 3E C5 2E 00 64 54 90 9A 00 54 46 BD 9A -- 0807B0
05 C7 FE E4 3E C5 2E 00 14 DB 64 9A 05 74 00 3D -- 0807C0
C7 B7 9A 00 00 08 C8 57 56 CB 5E 5F C9 9B 00 00 -- 0807D0
9C 3E C5 2E 32 74 00 3D 83 FE 98 3E C5 2E 00 4C -- 0807E0
FE 6C 36 FF 2E FE 6E 36 FF 2E 28 74 00 3D 83 FE -- 0807F0
A0 3E C5 2E 00 6A 06 6A 16 6A 00 6A 00 6A 01 FE -- 080800
14 C4 83 00 64 3D BA 9A 01 38 68 06 6A 35 FF FE -- 080810
2E 00 64 4A 0E 9A 10 74 00 3D 83 FE 60 3E C5 2E -- 080820
2E 00 64 4A 0E 9A 05 EB 00 01 05 C7 FE 60 3E C5 -- 080830
6A 02 EB 00 6A 04 75 00 01 3D 05 8B FE 78 3E C5 -- 080840
3D 83 FE 68 3E C5 2E 02 C4 83 00 4C 61 B4 9A 01 -- 080850
EB 3D 6A FE 6C 36 FF 2E FE 6E 36 FF 2E 0E 75 00 -- 080860
6A 03 6A 03 6A FE 6C 36 FF 2E FE 6E 36 FF 2E 0C -- 080870
3D 83 FE 6C 3E C5 2E 0A C4 83 00 64 40 D0 9A 6F -- 080880
00 E0 E9 02 C4 83 00 64 59 DC 9A 35 FF 0D 74 00 -- 080890
8B FE 70 3E C5 2E 00 4C 27 19 9A 00 54 3B 3B 9A -- 0808A0
FE 6C 36 FF 2E FE 6E 36 FF 2E 14 74 00 04 3D 05 -- 0808B0
3E C5 2E 00 01 B8 19 EB 04 C4 83 00 4C FD EA 9A -- 0808C0
2A 01 45 88 E4 2A 02 45 88 E4 2A 03 45 88 FE 74 -- 0808D0
00 05 C6 FE 7C 3E C5 2E 00 54 39 71 9A 05 88 E4 -- 0808E0
05 8B FE E8 3E C5 2E FF FF 05 C7 FE 94 3E C5 2E -- 0808F0
3E C5 2E FC 46 89 05 8B FE EC 3E C5 2E F8 46 89 -- 080900
```

568

```
FE F4 3E C5 2E FA 46 89 48 05 03 F8 46 8B FE F0 -- 080910
CA 9A 50 F8 46 8D 16 FE 46 89 48 05 03 FC 46 8B -- 080920
FE 6C 36 FF 2E FE 6E 36 FF 2E 04 C4 83 00 54 3C -- 080930
50 F8 46 8D 16 35 FF FE C4 3E C5 2E 00 6A 00 6A -- 080940
64 3D BA 9A 01 32 68 06 6A 35 FF FE A0 3E C5 2E -- 080950
00 6A 12 74 00 3D 83 FE 6C 3E C5 2E 14 C4 83 00 -- 080960
0A C4 83 00 64 28 52 9A 35 FF 00 6A 00 6A 00 6A -- 080970
8B FE F8 3E C5 2E 00 00 02 C8 57 56 CB 5E 5F C9 -- 080980
FE 6C 36 FF 2E FE 6E 36 FF 2E 57 75 00 01 3D 05 -- 080990
02 6A 35 FF FE A0 3E C5 2E 35 FF FE A4 3E C5 2E -- 0809A0
FE 6C 3E C5 2E 0C C4 83 00 64 3D BA 9A 01 2D 68 -- 0809B0
9A 35 FF 00 6A 00 6A 00 6A 00 6A 15 74 00 3D 83 -- 0809C0
44 D1 01 9A 00 6A 00 CE E9 0A C4 83 00 64 28 52 -- 0809D0
3E C5 2E 00 00 05 C7 FE F8 3E C5 2E 02 C4 83 00 -- 0809E0
FE 46 89 05 8B FE CC 3E C5 2E 00 00 05 C7 FE E4 -- 0809F0
3E C5 2E 00 64 4A 0E 9A 10 75 00 FE 7E 83 01 FE -- 080A00
7E 83 30 74 03 FE 7E 83 3B EB 00 01 05 C7 FE 60 -- 080A10
1E 74 07 FE 7E 83 24 74 02 FE 7E 83 2A 74 04 FE -- 080A20
01 FE 7E 83 12 74 15 FE 7E 83 18 74 08 FE 7E 83 -- 080A30
A2 9A 05 75 14 FE 7E 83 06 74 09 FE 7E 83 0C 74 -- 080A40
3E C5 2E 02 C4 83 00 5C 57 FE 9A 01 6A 00 14 EE -- 080A50
44 96 06 9A 07 75 14 FE 7E 83 00 01 05 C7 FE 60 -- 080A60
C5 2E 02 C4 83 00 44 89 33 9A FE 76 FF 0B EB 00 -- 080A70
2E 00 44 91 75 9A 05 75 00 15 3D 05 8B FE 94 3E -- 080A80
FF 05 C7 FE 94 3E C5 2E 00 07 05 C7 FE CC 3E C5 -- 080A90
57 56 CB 5E 5F C9 00 00 05 C7 FE FC 3E C5 2E FF -- 080AA0
64 22 15 9A 01 05 C6 FE 7C 3E C5 2E 00 00 C2 C8 -- 080AB0
3D 05 8B FF 00 3E C5 2E 00 01 05 C7 0A 7E C5 00 -- 080AC0
64 24 00 9A 01 6A 50 FF 48 86 8D 16 4D 75 FF FF -- 080AD0
89 FF 00 3E C5 2E E4 2A FF 4A 86 8A 06 C4 83 00 -- 080AE0
FF 08 3E C5 2E 14 74 00 3D 83 FF 04 3E C5 2E 05 -- 080AF0

2E 12 EB 04 00 05 C7 FF 0C 3E C5 2E 03 00 05 C7 -- 080B00
00 05 C7 FF 0C 3E C5 2E 01 80 05 C7 FF 08 3E C5 -- 080B10
00 04 3D 05 74 00 05 3D 05 8B FF 00 3E C5 2E 02 -- 080B20
FF 00 3E C5 2E 3B EB 00 01 05 C7 0A 7E C5 09 75 -- 080B30
5C 69 2F 9A 2A 74 00 0A 3D 2F 74 00 02 3D 05 8B -- 080B40
C7 0A 7E C5 1A 75 C0 0B 05 89 FF 10 3E C5 2E 00 -- 080B50
52 9A D4 01 68 00 6A 00 6A 00 6A 00 6A 00 02 05 -- 080B60
2E 05 89 FF 1C 3E C5 2E C0 2B 0A C4 83 00 64 28 -- 080B70
3E C5 2E 05 89 FF 18 3E C5 2E 05 89 FE 58 3E C5 -- 080B80
FF 14 3E C5 2E 05 89 FE C4 3E C5 2E 05 89 FE C8 -- 080B90
FE BC 3E C5 2E 00 01 05 C7 FE 60 3E C5 2E 05 89 -- 080BA0
19 75 05 0B 02 45 8B FF 20 3E C5 2E 00 00 05 C7 -- 080BB0
3E C5 2E 04 C4 83 00 64 4E A1 9A 00 80 68 10 6A -- 080BC0
FF 20 3E C5 2E 57 56 18 EB 02 55 89 05 89 FF 20 -- 080BD0
5F 00 8C 00 02 9A 08 00 68 00 6A 35 FF 02 75 FF -- 080BE0
68 10 6A 19 75 05 0B 02 45 8B FF 24 3E C5 2E 5E -- 080BF0
24 3E C5 2E 04 C4 83 00 64 4E A1 9A 00 80 01 FE -- 080C00
FF FF 24 3E C5 2E 57 56 18 EB 02 55 89 05 89 FF -- 080C10
5E 5F 00 8C 00 02 9A 08 00 68 00 6A 35 FF 02 75 -- 080C20
05 C7 FE F8 3E C5 2E FF FF 05 C7 FE 94 3E C5 2E -- 080C30
FF 28 3E C5 2E 00 00 05 C7 FE 78 3E C5 2E 00 00 -- 080C40
2E 15 D9 9B FE DC 3E C5 2E EE D9 9B 00 00 05 C7 -- 080C50
2E 15 D9 9B FE D4 3E C5 2E 15 D9 9B FE D8 3E C5 -- 080C60
00 00 05 C7 FE E4 3E C5 2E 1D D9 9B FE D0 3E C5 -- 080C70
FE AA 36 FF 2E 57 56 00 03 05 C7 FE FC 3E C5 2E -- 080C80
5E 5F 00 8C 00 02 9A 08 6A 00 6A FE A8 36 FF 2E -- 080C90
A0 14 9A 02 6B E9 03 75 00 3D 83 FE 54 3E C5 2E -- 080CA0
68 3E C5 2E 02 C4 83 00 4C C8 AA 9A 01 6A 00 44 -- 080CB0
```

```
05 8B FE 70 3E C5 2E 02 46 E9 03 75 00 3D 83 FE -- 080CC0
36 FF 2E FE 6E 36 FF 2E 02 37 E9 03 75 00 04 3D -- 080CD0
64 40 D0 9A 02 D0 68 04 6A 50 C0 46 8D 16 FE 6C -- 080CE0
7D 10 FF 3E BE 83 00 00 FF 3E 86 C7 0C C4 83 00 -- 080CF0
1E 8E 2E FF 2C 3E 03 2E F8 8B 05 FF 3E 86 6B 52 -- 080D00
2E 05 FF 3E 86 6B 57 56 05 88 FF 3E 86 8B FF 2E -- 080D10
C3 8B 51 CA 8B D8 8B FF 2E 16 8B 2E FF 2C 06 03 -- 080D20
2D D2 8C C5 03 02 E0 C1 FF 3E 86 8B 50 00 01 05 -- 080D30
3E 86 FF 5E 5F 00 5C FE EC 9A 04 6A 50 52 00 40 -- 080D40
FF 2E 36 FF 2E 50 FF 70 86 8D 16 57 56 A7 EB FF -- 080D50
86 C7 5E 5F 00 5C FE EC 9A 50 6A FF 2C 36 FF 2E -- 080D60
B6 8B 01 5B E9 03 7C 08 FF 3E BE 83 00 00 FF 3E -- 080D70
DF 03 07 16 DD 8B F8 8B 05 C6 6B 08 C6 83 FF 3E -- 080D80
71 85 8A FE 03 1F 16 FD 8B F0 8B 05 FF 3E 86 6B -- 080D90
8B 05 FF 3E 86 6B 29 74 FF 71 87 3A 26 E4 2A FF -- 080DA0
3E 8E 8B E4 2A FF 71 85 8A FE 03 1F 16 FD 8B F0 -- 080DB0
88 FE 03 1F 16 FD 8B F2 8B 05 D1 6B 08 C1 83 FF -- 080DC0
8B F8 8B 05 C6 6B 08 C6 83 FF 3E B6 8B FF 71 85 -- 080DD0
1F 16 FD 8B F0 8B 05 FF 3E 86 6B DF 03 07 16 DD -- 080DE0
6B 29 74 FF 72 87 3A 26 E4 2A FF 72 85 8A FE 03 -- 080DF0
85 8A FE 03 1F 16 FD 8B F0 8B 05 FF 3E 86 01 FE -- 080E00
F2 8B 05 D1 6B 08 C1 83 FF 3E 8E 8B E4 2A FF 72 -- 080E10
C6 83 FF 3E B6 8B FF 72 85 88 FE 03 1F 16 FD 8B -- 080E20
FF 3E 86 6B DF 03 07 16 DD 8B F8 8B 05 C6 6B 08 -- 080E30
26 E4 2A FF 73 85 8A FE 03 1F 16 FD 8B F0 8B 05 -- 080E40
16 FD 8B F0 8B 05 FF 3E 86 6B 29 74 FF 73 87 3A -- 080E50
08 C1 83 FF 3E 8E 8B E4 2A FF 73 85 8A FE 03 1F -- 080E60
8B FF 73 85 88 FE 03 1F 16 FD 8B F2 8B 05 D1 6B -- 080E70
03 07 16 DD 8B F8 8B 05 C6 6B 08 C6 83 FF 3E B6 -- 080E80
85 8A FE 03 1F 16 FD 8B F0 8B 05 FF 3E 86 6B DF -- 080E90

05 FF 3E 86 6B 29 74 FF 74 87 3A 26 E4 2A FF 74 -- 080EA0
8E 8B E4 2A FF 74 85 8A FE 03 1F 16 FD 8B F0 8B -- 080EB0
FE 03 1F 16 FD 8B F2 8B 05 D1 6B 08 C1 83 FF 3E -- 080EC0
FE 6E 36 FF 2E FE 9B E9 FF 3E 86 FF FF 74 85 88 -- 080ED0
68 05 6A 10 6A 50 FF 70 86 8D 16 FE 6C 36 FF 2E -- 080EE0
83 FE 6C 3E C5 2E 0E C4 83 00 64 40 D0 9A 01 41 -- 080EF0
55 E9 02 C4 83 00 64 59 DC 9A 35 FF 0D 74 00 3D -- 080F00
9A 00 44 CF 28 9A 00 00 05 C7 FE 54 3E C5 2E 01 -- 080F10
02 6A 04 74 00 3D 83 FE C0 3E C5 2E 00 44 D0 09 -- 080F20
54 39 71 9A 02 C4 83 00 4C 27 B3 9A 01 6A 02 EB -- 080F30
00 DA E9 03 75 00 04 3D 05 8B FE 70 3E C5 2E 00 -- 080F40
FF 2E FE 6E 36 FF 2E 00 00 05 C7 FF 30 3E C5 2E -- 080F50
06 6A 00 6A 00 80 68 50 FF 6C 86 8D 16 FE 6C 36 -- 080F60
2A FF 6C 86 8A 10 C4 83 00 64 40 D0 9A 02 C1 68 -- 080F70
88 E4 2A FF 6D 86 8A 01 45 88 FF 34 3E C5 2E E4 -- 080F80
07 45 88 C0 2B 03 45 88 E4 2A FF 6E 86 8A 02 45 -- 080F90
2A 0A 45 88 00 FF B8 FF 06 45 C6 05 45 88 E4 2A -- 080FA0
88 E4 2A 0E 45 88 C0 2B 00 0B 45 C6 09 45 88 E4 -- 080FB0
45 88 E4 2A 12 45 88 00 FF B8 FF 0F 45 C6 0D 45 -- 080FC0
15 45 88 E4 2A 17 45 88 00 FF B8 00 11 45 C6 13 -- 080FD0
2A 1A 45 88 E4 2A 1B 45 88 00 FF B8 00 16 45 C6 -- 080FE0
45 C6 1F 45 88 E4 2A 1E 45 88 C0 2B 19 45 88 E4 -- 080FF0
2A 18 45 88 E4 2A 1C 45 88 00 80 B8 FF 1D 01 FE -- 081000
E4 2A 0C 45 88 E4 2A 10 45 88 E4 2A 14 45 88 E4 -- 081010
4C C2 49 9A 05 88 E4 2A 04 45 88 E4 2A 08 45 88 -- 081020
FF 40 86 8D 16 FE 6C 36 FF 2E FE 6E 36 FF 2E 00 -- 081030
3B 68 05 6A 35 FF FE A0 3E C5 2E 00 6A 00 6A 50 -- 081040
3D 83 FE 68 3E C5 2E 12 C4 83 00 64 3D BA 9A 01 -- 081050
55 57 56 CB 5E 5F C9 9B 00 54 C8 1C 9A 05 75 00 -- 081060
```

570

```
75 FF 1B 74 05 0B 02 45 8B FF 20 3E C5 2E EC 8B -- 081070
FF 20 3E C5 2E 04 C4 83 00 64 4E E3 9A 35 FF 02 -- 081080
45 8B FF 24 3E C5 2E 00 00 02 45 C7 00 00 05 C7 -- 081090
83 00 64 4E E3 9A 35 FF 02 75 FF 1B 74 05 0B 02 -- 0810A0
00 00 02 45 C7 00 00 05 C7 FF 24 3E C5 2E 04 C4 -- 0810B0
FF 02 75 FF 1B 74 05 0B 02 45 8B FF 38 3E C5 2E -- 0810C0
05 C7 FF 38 3E C5 2E 04 C4 83 00 64 4E E3 9A 35 -- 0810D0
0B 02 45 8B FF 3C 3E C5 2E 00 00 02 45 C7 00 00 -- 0810E0
04 C4 83 00 64 4E E3 9A 35 FF 02 75 FF 1B 74 05 -- 0810F0
C5 2E 00 00 02 45 C7 00 00 05 C7 FF 3C 3E C5 2E -- 081100
9A 35 FF 02 75 FF 1B 74 05 0B 02 45 8B FF 40 3E -- 081110
00 00 05 C7 FF 40 3E C5 2E 04 C4 83 00 64 4E E3 -- 081120
74 05 0B 02 45 8B FF 44 3E C5 2E 00 00 02 45 C7 -- 081130
C5 2E 04 C4 83 00 64 4E E3 9A 35 FF 02 75 FF 1B -- 081140
48 3E C5 2E 00 00 02 45 C7 00 00 05 C7 FF 44 3E -- 081150
4E E3 9A 35 FF 02 75 FF 1B 74 05 0B 02 45 8B FF -- 081160
45 C7 00 00 05 C7 FF 48 3E C5 2E 04 C4 83 00 64 -- 081170
FF 1B 74 05 0B 02 45 8B FF 4C 3E C5 2E 00 00 02 -- 081180
4C 3E C5 2E 04 C4 83 00 64 4E E3 9A 35 FF 02 75 -- 081190
8B FF 50 3E C5 2E 00 00 02 45 C7 00 00 05 C7 FF -- 0811A0
00 64 4E E3 9A 35 FF 02 75 FF 1B 74 05 0B 02 45 -- 0811B0
00 02 45 C7 00 00 05 C7 FF 50 3E C5 2E 04 C4 83 -- 0811C0
02 75 FF 1B 74 05 0B 02 45 8B FF 54 3E C5 2E 00 -- 0811D0
C7 FF 54 3E C5 2E 04 C4 83 00 64 4E E3 9A 35 FF -- 0811E0
8B 55 57 56 CB 5E 5F C9 00 00 02 45 C7 00 00 05 -- 0811F0
3E C5 2E 56 75 01 3D 80 FE 7C 3E C5 2E EC 01 FE -- 081200
36 FF 2E 0A 76 FF 0C 76 FF 33 74 00 3D 83 FE 68 -- 081210
D0 9A 01 41 68 05 6A 10 6A FF 2C 36 FF 2E FF 2E -- 081220
35 FF 0C 74 00 3D 83 0A 7E C5 0E C4 83 00 64 40 -- 081230

3E C5 2E 00 01 B8 19 EB 02 C4 83 00 64 59 DC 9A -- 081240
2A 01 45 88 E4 2A 02 45 88 E4 2A 03 45 88 FE 74 -- 081250
00 3C A6 FE 00 6C 16 5A 00 CB 5E 5F C9 05 88 E4 -- 081260
00 3C 91 26 00 3C A6 C6 00 6C 16 60 00 6C 30 E4 -- 081270
00 3C A6 E6 00 24 F4 C6 00 3C B3 24 00 6C 17 DC -- 081280
00 6C 23 2E 00 6C 16 82 00 6C 23 2C 00 3C 86 9A -- 081290
00 3C 90 C2 00 3C A6 BC 00 6C 22 F6 00 6C 22 F4 -- 0812A0
00 3C A6 DE 00 6C 16 58 00 3C F5 A4 00 3C 91 14 -- 0812B0
00 3C A7 00 00 3C A6 E4 00 3C A6 E2 00 3C A6 E0 -- 0812C0
00 3C A7 04 00 3C A7 02 00 6C 16 5C 00 3C A6 C2 -- 0812D0
00 3C A6 F0 00 3C A6 EC 00 3C A6 E8 00 6C 17 62 -- 0812E0
00 3C AE DA 00 3C A6 B4 00 24 F4 7A 00 3C A6 F4 -- 0812F0
00 3C A6 B8 00 3C AE D8 00 3C AE D6 00 3C AE DC -- 081300
00 6C 17 D8 00 3C B3 28 00 6C 16 4C 00 3C A6 BA -- 081310
00 6C 17 CA 00 3C A6 C4 00 6C 16 4A 00 6C 17 DA -- 081320
00 3C A6 CE 00 6C 16 52 00 6C 16 4E 00 3C A6 C0 -- 081330
00 6C 30 E8 00 6C 16 62 00 6C 16 56 00 6C 17 DE -- 081340
00 6C 17 BA 00 6C 17 B6 00 6C 17 B2 00 6C 30 DE -- 081350
8B 55 57 56 00 6C 17 C6 00 6C 17 C2 00 6C 17 BE -- 081360
00 02 9A 01 6A 00 6A 12 76 FF 14 76 FF 57 56 EC -- 081370
D8 68 0E 06 75 00 01 7D 80 0A 7E C5 5E 5F 00 8C -- 081380
57 84 9A 12 76 FF 14 76 FF FF EA 68 0E 04 EB FF -- 081390
FF 50 00 03 05 0A 46 8B 0C 76 FF 08 C4 83 00 64 -- 0813A0
FC 68 0E 08 C4 83 00 64 57 84 9A 12 76 FF 14 76 -- 0813B0
FF 08 C4 83 00 64 57 84 9A 12 76 FF 14 76 FF FF -- 0813C0
9A 12 76 FF 14 76 FF 50 00 03 05 0E 46 8B 10 76 -- 0813D0
65 73 75 3A 00 CB 5E 5F C9 08 C4 83 00 64 57 84 -- 0813E0
75 3A 00 2F 73 62 6F 6A 3A 73 65 6C 69 66 5F 72 -- 0813F0
73 62 6F 6A 3A 31 73 65 6C 69 66 72 65 73 01 FE -- 081400
00 FC 46 C7 00 04 BC C8 57 56 00 00 00 2F 00 2F -- 081410
```

```
00  00  FA  46  C7  00  00  F8  46  C7  00  00  FE  46  C7  00  --  081420
0F  8C  3E  C5  2E  00  54  C8  1C  9A  00  00  FB  68  86  C7  --  081430
3E  C5  2E  00  01  05  C7  0F  90  3E  C5  2E  00  01  05  C7  --  081440
14  74  00  3D  83  0F  98  3E  C5  2E  00  02  05  C7  0F  94  --  081450
83  00  4C  06  68  9A  0F  9C  36  FF  2E  0F  9E  36  FF  2E  --  081460
1D  7C  00  01  3D  05  8B  0F  9C  3E  C5  2E  29  EB  04  C4  --  081470
64  40  D0  9A  01  F6  68  03  6A  35  FF  50  A0  46  8D  16  --  081480
3E  C5  2E  D7  EB  0D  FF  0F  9C  3E  C5  2E  0A  C4  83  00  --  081490
05  C6  0F  A4  3E  C5  2E  0A  75  00  03  3D  05  8B  0F  A0  --  0814A0
50  A0  46  8D  16  16  05  C6  0F  A4  3E  C5  2E  08  EB  0B  --  0814B0
6E  6A  05  6A  01  6A  0F  A4  36  FF  2E  0F  A6  36  FF  2E  --  0814C0
76  FF  0B  74  00  A0  7E  83  0E  C4  83  00  64  40  D0  9A  --  0814D0
3D  83  0F  98  3E  C5  2E  02  C4  83  00  44  56  66  9A  A0  --  0814E0
8B  05  FF  0F  9C  3E  C5  2E  50  A0  46  8D  16  3B  75  00  --  0814F0
83  0A  C4  83  00  64  40  D0  9A  01  F5  68  03  6A  50  05  --  081500
02  C4  83  00  44  56  66  9A  A0  76  FF  0B  74  00  A0  7E  --  081510
8D  16  05  89  0F  A8  3E  C5  2E  05  8B  0F  9C  3E  C5  2E  --  081520
68  03  6A  50  05  FF  05  8B  0F  AC  3E  C5  2E  50  A0  46  --  081530
0B  74  00  A0  7E  83  0A  C4  83  00  64  40  D0  9A  02  02  --  081540
0F  98  3E  C5  2E  02  C4  83  00  44  56  66  9A  A0  76  FF  --  081550
3E  C5  2E  05  D9  9B  0F  B4  3E  C5  2E  52  75  00  3D  83  --  081560
9B  0F  B4  3E  C5  2E  0F  BC  36  C4  2E  1D  D9  9B  0F  B0  --  081570
C5  2E  1D  D9  9B  0F  B8  3E  C5  2E  04  D8  26  9B  05  D9  --  081580
C4  2E  1D  D9  9B  0F  C0  3E  C5  2E  05  D9  9B  0F  C4  3E  --  081590
2E  04  D8  26  9B  05  D9  9B  0F  C4  3E  C5  2E  0F  CC  36  --  0815A0
3E  C5  2E  00  00  FB  A0  86  C7  1D  D9  9B  0F  C8  3E  C5  --  0815B0
36  FF  2E  02  6A  14  6A  12  6A  37  74  00  3D  80  0F  D0  --  0815C0
D4  36  FF  2E  0F  D6  36  FF  2E  0F  D8  36  FF  2E  0F  DA  --  0815D0

50  8E  46  8D  16  50  52  0C  C4  83  00  5C  93  FD  9A  0F  --  0815E0
86  C7  06  74  00  9C  7E  83  0A  C4  83  00  5C  ED  6E  9A  --  0815F0
FB  9E  BE  81  00  00  FB  9E  86  C7  00  01  FB  A0  01  FE  --  081600
2E  0F  DC  3E  03  2E  E7  D1  FB  9E  BE  8B  1A  74  01  00  --  081610
C5  2E  DE  EB  FB  9E  86  FF  00  01  05  C7  0F  DE  1E  8E  --  081620
0E  E9  03  74  00  FB  A0  BE  83  00  00  05  C7  0F  E0  3E  --  081630
6A  00  6A  0F  E4  36  FF  2E  0F  E6  36  FF  2E  57  56  05  --  081640
2E  0F  EA  36  FF  2E  57  56  5E  5F  00  8C  00  02  9A  0A  --  081650
6A  5E  5F  00  8C  00  02  9A  0A  6A  00  6A  0F  E8  36  FF  --  081660
0F  EE  36  FF  2E  0F  D8  36  FF  2E  0F  DA  36  FF  2E  12  --  081670
16  57  56  0A  C4  83  00  5C  ED  6E  9A  0F  EC  36  FF  2E  --  081680
5F  00  8C  00  02  9A  02  4E  68  00  6A  50  FC  9E  86  8D  --  081690
C7  FC  A4  96  89  FC  A2  86  89  90  56  8B  8E  46  8B  5E  --  0816A0
FC  9E  86  8D  16  50  FC  76  86  8D  16  00  00  FC  9A  86  --  0816B0
A0  46  89  0A  C4  83  00  5C  48  F8  9A  FC  9A  B6  FF  50  --  0816C0
C7  02  C4  83  00  44  56  66  9A  50  09  74  00  A0  7E  83  --  0816D0
50  FF  36  86  8D  16  50  A2  46  8D  16  00  01  FF  36  86  --  0816E0
46  89  0C  C4  83  00  5C  4D  20  9A  50  FC  9E  86  8D  16  --  0816F0
02  C4  83  00  44  56  66  9A  50  09  74  00  A0  7E  83  A0  --  081700
64  4E  56  9A  50  07  C7  6B  F8  8B  E4  2A  FF  7B  86  8A  --  081710
FF  79  86  8A  FE  F0  96  89  FE  EE  86  89  02  C4  83  00  --  081720
02  C4  83  00  64  4E  56  9A  50  28  C7  6B  F8  8B  E4  2A  --  081730
FE  F0  B6  FF  00  6A  00  6A  FB  9C  96  89  FB  9A  86  89  --  081740
9E  86  8D  16  50  FC  9D  86  8D  16  50  52  FE  EE  B6  FF  --  081750
A0  7E  83  A0  46  89  14  C4  83  00  5C  4E  3D  9A  50  FC  --  081760
FB  9E  86  C7  02  C4  83  00  44  56  66  9A  50  09  74  00  --  081770
86  6B  27  74  FB  9E  86  3B  E4  2A  FF  7B  86  8A  00  00  --  081780
D1  3D  8B  FE  F0  9E  8E  FE  EE  BE  03  F8  8B  07  FB  9E  --  081790
FF  00  02  05  C7  0F  DE  1E  8E  2E  0F  DC  3E  03  2E  E7  --  0817A0
2E  FB  A2  86  89  05  8B  FE  EE  BE  C5  CD  EB  FB  9E  86  --  0817B0
0F  90  3E  C5  2E  0B  75  00  02  3D  05  89  0F  94  3E  C5  --  0817C0
```

```
C5 00 02 05 C7 0F 90 3E C5 2E 09 EB 00 01 05 C7 -- 0817D0
50 FE F2 86 8D 16 FE EC 86 89 04 45 8B FE EE BE -- 0817E0
83 00 5C 4D 59 9A 50 FC 9E 86 8D 16 FE EC B6 FF -- 0817F0
66 9A 50 09 74 00 A0 7E 83 A0 46 89 0A C4 01 FE -- 081800
5C 49 0B 9A 50 FC 9E 86 8D 16 02 C4 83 00 44 56 -- 081810
C4 83 00 5C 94 D5 9A 50 8E 46 8D 16 04 C4 83 00 -- 081820
4E E3 9A FE EE B6 FF FE F0 B6 FF FB A4 86 89 04 -- 081830
36 FF 2E 50 FF 10 86 8D 16 68 6A 04 C4 83 00 64 -- 081840
52 08 C4 83 00 5C 91 A4 9A 0F F0 36 FF 2E 0F F2 -- 081850
83 0A C4 83 00 5C ED 6E 9A 50 FC 0E 86 8D 16 50 -- 081860
83 00 64 59 DC 9A FC 74 B6 FF 0F 74 00 FC 74 BE -- 081870
FF 54 86 8D 16 01 6A 01 6A 12 6A 04 8D E9 02 C4 -- 081880
00 5C 94 45 9A 0F F0 36 FF 2E 0F F2 36 FF 2E 50 -- 081890
00 5C ED 6E 9A 50 FF 7C 86 8D 16 50 52 0C C4 83 -- 0818A0
44 56 66 9A 8A 76 FF 0B 74 00 8A 7E 83 0A C4 83 -- 0818B0
89 FC 46 89 FF 7E 96 8B FF 7C 86 8B 02 C4 83 00 -- 0818C0
2E 0F F2 36 FF 2E 50 FF 54 86 8D 16 68 6A FE 56 -- 0818D0
8D 16 50 52 08 C4 83 00 5C 91 A4 9A 0F F0 36 FF -- 0818E0
8D 16 12 6A 0A C4 83 00 5C ED 6E 9A 50 FB A6 86 -- 0818F0
6E 9A 0F F4 36 FF 2E 0F F6 36 FF 2E 50 FB FA 86 -- 081900
36 FF 2E 0F F6 36 FF 2E 12 6A 0A C4 83 00 5C ED -- 081910
5C ED 6E 9A 0F F8 36 FF 2E 0F FA 36 FF 2E 0F F4 -- 081920
FE 36 FF 2E 50 FB A6 86 8D 16 66 6A 0A C4 83 00 -- 081930
01 6A 0A C4 83 00 5C ED 6E 9A 0F FC 36 FF 2E 0F -- 081940
10 00 36 FF 2E 10 02 36 FF 2E FC 76 FF FE 76 FF -- 081950
16 00 97 E9 03 75 C0 0B 0A C4 83 00 34 B1 E5 9A -- 081960
3E C5 2E 04 C4 83 00 5C 94 D5 9A 50 FF 7C 86 8D -- 081970

2E 05 D9 9B 0F B0 3E C5 2E 76 7E 00 3D 83 0F A8 -- 081980
2E 05 D9 9B 0F C0 3E C5 2E 1D D9 9B 10 04 3E C5 -- 081990
2E 05 D9 9B 0F B8 3E C5 2E 1D D9 9B 10 08 3E C5 -- 0819A0
2E 05 D9 9B 0F C8 3E C5 2E 1D D9 9B 10 0C 3E C5 -- 0819B0
06 36 FF 2E 50 A0 46 8D 16 1D D9 9B 10 10 3E C5 -- 0819C0
00 64 40 D0 9A 01 F8 68 04 6A 10 04 36 FF 2E 10 -- 0819D0
44 56 66 9A A0 76 FF 0B 74 00 A0 7E 83 0C C4 83 -- 0819E0
00 03 B8 00 00 05 C7 0F A8 3E C5 2E 02 C4 83 00 -- 0819F0
00 3D 83 10 14 3E C5 2E 03 0A E9 0A 7E C5 01 FE -- 081A00
60 DD 9A FC 76 FF FE 76 FF 00 5C 61 05 9A 05 74 -- 081A10
2E 10 18 36 FF 2E 10 1A 36 FF 2E 04 C4 83 00 5C -- 081A20
C4 83 00 4C 0B 23 9A 10 00 36 FF 2E 10 02 36 FF -- 081A30
12 47 68 03 6A 00 6A 00 6A 00 6A 16 75 C0 0B 08 -- 081A40
10 14 3E C5 2E FF 16 E9 0A C4 83 00 64 28 52 9A -- 081A50
3E C5 2E 00 01 05 C7 10 1C 3E C5 2E 00 01 05 C7 -- 081A60
64 43 A9 9A FC 76 FF FE 76 FF 00 01 05 C7 10 20 -- 081A70
00 44 5E 3A 9A 05 89 0F E0 3E C5 2E 04 C4 83 00 -- 081A80
C5 2E 04 C4 83 00 5C 94 D5 9A 50 FF 7C 86 8D 16 -- 081A90
6A 50 A0 46 8D 16 09 75 00 03 3D 05 8B 0F A0 3E -- 081AA0
6F F0 9A 07 74 00 3D 83 0F 98 3E C5 2E 18 EB 0B -- 081AB0
9A 6F 6A 03 6A 16 6A 50 A0 46 8D 16 13 EB 00 44 -- 081AC0
74 00 3D 83 10 24 3E C5 2E 0A C4 83 00 64 40 D0 -- 081AD0
3D 05 8B 0F A0 3E C5 2E 11 EB 00 14 DB 64 9A 07 -- 081AE0
05 8B 0F A0 3E C5 2E 00 14 F1 5A 9A 05 74 00 03 -- 081AF0
14 55 74 9A 00 6A 00 44 5A FD 9A 11 75 00 03 3D -- 081B00
10 28 36 C4 2E 00 4C 02 61 9A 05 EB 02 C4 83 00 -- 081B10
60 DD 9A 05 89 10 28 3E C5 2E 04 2B 26 00 01 B8 -- 081B20
3D 83 0F 98 3E C5 2E 00 02 05 C7 0A 7E C5 00 44 -- 081B30
00 44 5F EB 9A 01 9B E9 00 44 70 64 9A 08 74 00 -- 081B40
DC 3E 03 2E E7 D1 3D 8B 0F 94 3E C5 2E 01 93 E9 -- 081B50
C7 0F E0 3E C5 2E 00 02 05 C7 0F DE 1E 8E 2E 0F -- 081B60
3E C5 2E 10 30 36 C4 2E 00 44 5E 3A 9A 00 02 05 -- 081B70
```

573

```
07 76 00 5C ED 94 9A 1C D8 26 9B 05 D9 9B 10 2C -- 081B80
2E 05 D9 9B 10 30 3E C5 2E 05 EB 10 2C 3E C5 2E -- 081B90
34 3E C5 2E 10 38 36 C4 2E 1D D9 9B 10 2C 3E C5 -- 081BA0
2E 07 76 00 5C ED 94 9A 1C D8 26 9B 05 D9 9B 10 -- 081BB0
C5 2E 05 D9 9B 10 38 3E C5 2E 05 EB 10 34 3E C5 -- 081BC0
2E 00 00 05 C7 10 14 3E C5 2E 1D D9 9B 10 34 3E -- 081BD0
2E 00 01 05 C7 0A 7E C5 00 00 05 C7 10 20 3E C5 -- 081BE0
01 05 C7 0F 90 3E C5 2E 00 02 05 C7 0F 94 3E C5 -- 081BF0
9A 18 75 00 03 3D 05 8B 0F A0 3E C5 2E 00 01 FE -- 081C00
B3 44 9A 35 FF 0F 94 3E C5 2E 0B 6A 00 44 5A FD -- 081C10
4C 02 61 9A 00 4C 00 BC 9A 2A EB 04 C4 83 00 5C -- 081C20
00 4C 12 C1 9A 07 74 00 3D 83 0F 98 3E C5 2E 00 -- 081C30
C4 83 00 5C B3 DE 9A 35 FF 0F 94 3E C5 2E 0F EB -- 081C40
28 3E C5 2E 04 2B 26 00 01 B8 10 28 36 C4 2E 02 -- 081C50
00 3D 83 0F A8 3E C5 2E 00 44 60 DD 9A 05 89 10 -- 081C60
9B 10 04 3E C5 2E 05 D9 9B 0F B0 3E C5 2E 76 7E -- 081C70
9B 10 08 3E C5 2E 05 D9 9B 0F C0 3E C5 2E 1D D9 -- 081C80
9B 10 0C 3E C5 2E 05 D9 9B 0F B8 3E C5 2E 1D D9 -- 081C90
9B 10 10 3E C5 2E 05 D9 9B 0F C8 3E C5 2E 1D D9 -- 081CA0
04 36 FF 2E 10 06 36 FF 2E 50 A0 46 8D 16 1D D9 -- 081CB0
7E 83 0C C4 83 00 64 40 D0 9A 01 F8 68 04 6A 10 -- 081CC0
2E 02 C4 83 00 44 56 66 9A A0 76 FF 0B 74 00 A0 -- 081CD0
2E 10 3E 36 FF 2E 57 56 00 00 05 C7 0F A8 3E C5 -- 081CE0
00 68 0F DC 36 FF 2E 0F DE 36 FF 2E 10 3C 36 FF -- 081CF0
2E 05 8B 0F E0 3E C5 2E 5E 5F 00 5C FF 6A 9A 01 -- 081D00
00 02 C8 57 56 CB 5E 5F C9 9B 05 89 10 40 3E C5 -- 081D10

1A 9C 9A 05 75 00 01 3D 05 8B 10 44 3E C5 2E 00 -- 081D20
10 1C 3E C5 2E 00 00 05 C7 10 48 3E C5 2E 00 4C -- 081D30
2E 57 56 00 00 05 C7 10 14 3E C5 2E 00 00 05 C7 -- 081D40
00 02 9A 0A 6A 00 6A 10 4C 36 FF 2E 10 4E 36 FF -- 081D50
0F D0 36 FF 2E 0F D2 36 FF 2E 57 56 5E 5F 00 8C -- 081D60
36 FF 2E 57 56 5E 5F 00 8C 00 02 9A 0A 6A 00 6A -- 081D70
00 8C 00 02 9A 0A 6A 00 6A 0F E4 36 FF 2E 0F E6 -- 081D80
00 6A 0F E8 36 FF 2E 0F EA 36 FF 2E 57 56 5E 5F -- 081D90
05 C7 10 20 3E C5 2E 5E 5F 00 8C 00 02 9A 0A 6A -- 081DA0
C5 2E 05 8B 10 44 3E C5 2E 00 54 A2 55 9A 00 00 -- 081DB0
8D 16 00 07 05 C7 10 44 3E C5 2E 05 89 10 50 3E -- 081DC0
10 50 3E C5 2E 04 C4 83 00 54 00 00 9A 50 FE 46 -- 081DD0
55 57 56 CB 5E 5F C9 05 89 10 44 3E C5 2E 05 8B -- 081DE0
56 CB 5E 5F C9 00 01 05 C7 10 54 3E C5 2E EC 8B -- 081DF0
10 58 36 FF 2E 10 5A 36 FF 2E EC 8B 55 57 01 FE -- 081E00
02 C8 57 56 CB 5E 5F C9 04 C4 83 00 5C CF 43 9A -- 081E10
00 00 05 C7 10 48 3E C5 2E 00 00 FE 46 C7 00 00 -- 081E20
C5 2E 05 89 10 50 3E C5 2E 05 8B 10 44 3E C5 2E -- 081E30
FF 2E 10 4E 36 FF 2E 57 56 00 07 05 C7 10 44 3E -- 081E40
57 56 5E 5F 00 8C 00 02 9A 0A 6A 00 6A 10 4C 36 -- 081E50
02 9A 0A 6A 00 6A 0F D0 36 FF 2E 0F D2 36 FF 2E -- 081E60
C7 7A 74 00 3D 83 10 54 3E C5 2E 5E 5F 00 8C 00 -- 081E70
89 10 44 3E C5 2E 05 8B 10 50 3E C5 2E 00 00 05 -- 081E80
C5 2E 02 02 E9 03 75 00 3D 83 10 14 3E C5 2E 05 -- 081E90
FF 2E 0F FA 36 FF 2E 57 56 00 01 05 C7 10 20 3E -- 081EA0
9A 12 6A 0F F4 36 FF 2E 0F F6 36 FF 2E 0F F8 36 -- 081EB0
36 FF 2E 0F DA 36 FF 2E 57 56 5E 5F 00 5C FE EC -- 081EC0
EC 9A 12 6A 0F EC 36 FF 2E 0F EE 36 FF 2E 0F D8 -- 081ED0
55 9A 00 01 05 C7 10 1C 3E C5 2E 5E 5F 00 5C FE -- 081EE0
05 C7 10 54 3E C5 2E 01 B5 E9 00 02 B8 00 54 A2 -- 081EF0
03 9A 0A 6A 10 4C 36 FF 2E 10 4E 36 FF 2E 00 00 -- 081F00
82 E9 12 60 68 06 75 FF FF 3D 06 C4 83 00 5C D0 -- 081F10
80 10 4C 3E C5 2E 00 00 05 C7 10 1C 3E C5 2E 01 -- 081F20
```

574

EP 0 533 348 A2

```
5E 36 FF 2E 57 10 4E 36 FF 2E 57 56 3B 75 00 3D -- 081F30
2E 10 5E 36 FF 2E 50 00 03 05 10 5C 06 8B 2E 10 -- 081F40
04 C4 83 00 64 5C 0E 9A 50 00 03 05 10 5C 06 8B -- 081F50
2E 00 04 05 C7 0A 7E C5 5E 5F 00 5C FE EC 9A 50 -- 081F60
C4 83 00 64 5C 0E 9A 10 4C 36 FF 2E 10 4E 36 FF -- 081F70
36 FF 2E 0F D2 36 FF 2E 57 56 95 7F 00 0A 3D 04 -- 081F80
4E 36 FF 2E 10 4C 36 FF 2E 10 4E 36 FF 2E 0F D0 -- 081F90
9A 50 04 C4 83 00 64 5C 0E 9A 10 4C 36 FF 2E 10 -- 081FA0
10 60 36 FF 2E 10 62 36 FF 2E 5E 5F 00 5C FE EC -- 081FB0
83 00 64 5A 60 9A 10 4C 36 FF 2E 10 4E 36 FF 2E -- 081FC0
64 3E C5 2E E4 2A 01 45 8A 0F D4 3E C5 2E 08 C4 -- 081FD0
F8 3E C5 2E E4 2A 05 8A 0F D4 3E C5 2E 05 88 10 -- 081FE0
36 FF 2E 10 68 36 FF 2E 10 6A 36 FF 2E 05 88 0F -- 081FF0
C4 83 00 64 5A 60 9A 0F D0 36 FF 2E 0F D2 01 FE -- 082000
10 6C 3E C5 2E E4 2A 01 45 8A 0F D4 3E C5 2E 08 -- 082010
0F D8 3E C5 2E E4 2A 05 8A 0F D4 3E C5 2E 05 88 -- 082020
5C D3 8B 9A 10 4C 36 FF 2E 10 4E 36 FF 2E 05 88 -- 082030
89 C0 2B 02 EB 00 01 B8 05 74 C0 0B 04 C4 83 00 -- 082040
7E C5 00 54 0E 83 9A 4C EB 50 03 74 C0 0B FE 46 -- 082050
00 3D 83 10 1C 3E C5 2E 4D 75 00 01 3D 05 89 0A -- 082060
04 C4 83 00 54 00 00 9A 0A 76 FF 0C 76 FF 0E 75 -- 082070
9A 24 EB 00 03 B8 05 75 00 03 3D 05 8B 0A 7E C5 -- 082080
10 44 3E C5 2E 05 8B 10 50 3E C5 2E 00 54 A2 55 -- 082090
00 03 B8 02 C4 83 00 64 59 DC 9A 12 61 68 11 EB -- 0820A0
C5 2E EC 8B 55 57 56 CB 5E 5F C9 05 89 0A 7E C5 -- 0820B0

C5 2E 05 8B 10 44 3E C5 2E 00 00 05 C7 10 48 3E -- 0820C0
C5 2E 00 07 05 C7 10 44 3E C5 2E 05 89 10 50 3E -- 0820D0
00 00 9A 0A 76 FF 0C 76 FF 00 00 05 C7 10 1C 3E -- 0820E0
9A 05 74 00 03 3D 05 8B 0A 7E C5 04 C4 83 00 54 -- 0820F0
10 44 3E C5 2E 05 8B 10 50 3E C5 2E 00 54 A2 55 -- 082100
C7 0A 7E C5 00 07 D2 C8 57 56 CB 5E 5F C9 05 89 -- 082110
10 70 36 FF 2E 10 72 36 FF 2E 07 BA 68 00 03 05 -- 082120
86 8B 0A C4 83 00 5C ED 6E 9A 50 F8 46 86 8D 16 -- 082130
D2 8C C5 03 03 DC F8 44 86 69 F8 44 86 89 F8 46 -- 082140
C6 F8 40 BE C5 F8 42 96 89 F8 40 86 89 05 71 2D -- 082150
85 C7 1F 16 FD 03 F8 8B 03 DC F8 44 86 69 00 05 -- 082160
86 69 0F D4 36 FF 2E 0F D6 36 FF 2E 00 14 FC 22 -- 082170
52 05 C5 2D C7 03 5A 16 C5 8B F8 8B 03 DC F8 44 -- 082180
46 86 8D 16 07 BA 68 08 C4 83 00 64 5B B4 9A 50 -- 082190
36 FF 2E 10 76 36 FF 2E 00 6A 0A 6A 04 6A 50 F8 -- 0821A0
86 89 F8 46 86 8B 10 C4 83 00 5C A5 FF 9A 10 74 -- 0821B0
57 56 00 AD E9 03 75 00 3D 80 F8 40 BE C5 F8 44 -- 0821C0
6A 57 F8 42 B6 FF 0F D0 36 FF 2E 0F D2 36 FF 2E -- 0821D0
3E C5 2E 00 1C FB 2F 9A 5E 5F 00 5C FE EC 9A 0F -- 0821E0
C5 2E 05 88 10 6C 3E C5 2E E4 2A 01 45 8A 0F D4 -- 0821F0
05 88 0F D8 3E C5 2E E4 2A 05 8A 0F D4 3E 01 FE -- 082200
83 00 64 5C 0E 9A 0F D0 36 FF 2E 0F D2 36 FF 2E -- 082210
7E C5 00 54 0E 83 9A 05 88 10 78 3E C5 2E 04 C4 -- 082220
FF 2E 01 6A 14 6A 12 6A 6B 75 00 01 3D 05 89 0A -- 082230
36 FF 2E 0F D6 36 FF 2E 0F D8 36 FF 2E 0F DA 36 -- 082240
2E 86 8D 16 50 52 0C C4 83 00 5C 93 FD 9A 0F D4 -- 082250
74 00 F8 3C BE 83 0A C4 83 00 5C ED 6E 9A 50 F8 -- 082260
00 03 B8 02 C4 83 00 64 59 DC 9A F8 3C B6 FF 16 -- 082270
94 D5 9A 50 F8 2E 86 8D 16 1C EB 05 89 0A 7E C5 -- 082280
00 54 0C 97 9A 0A 76 FF 0C 76 FF 04 C4 83 00 5C -- 082290
6A 12 6A 00 00 82 C8 57 56 CB 5E 5F C9 04 C4 83 -- 0822A0
36 FF 2E 0F D8 36 FF 2E 0F DA 36 FF 2E 01 6A 14 -- 0822B0
52 0C C4 83 00 5C 93 FD 9A 0F D4 36 FF 2E 0F D6 -- 0822C0
83 0A C4 83 00 5C ED 6E 9A 50 FF 7E 86 8D 16 50 -- 0822D0
```

575

```
01 6A 00 6A 02 6A 08 6A 00 A4 E9 03 74 00 8C 7E -- 0822E0
16 50 52 0A C4 83 00 5C 92 35 9A 50 82 46 8D 16 -- 0822F0
7E 86 8D 16 0A C4 83 00 5C ED 6E 9A 50 F8 46 8D -- 082300
F8 46 8D 16 68 6A 04 C4 83 00 5C 94 D5 9A 50 FF -- 082310
00 5C 91 A4 9A 0F F0 36 FF 2E 0F F2 36 FF 2E 50 -- 082320
83 00 5C ED 6E 9A 50 90 46 8D 16 50 52 08 C4 83 -- 082330
00 64 59 DC 9A F6 76 FF 10 74 00 F6 7E 83 0A C4 -- 082340
36 FF 2E 50 E7 46 8D 16 37 EB 00 03 B8 02 C4 83 -- 082350
00 64 5A 20 9A 50 00 03 05 10 5C 06 8B 2E 10 5E -- 082360
68 00 6A 00 6A 00 6A 00 6A 15 74 C0 0B 08 C4 83 -- 082370
C9 00 01 B8 C7 EB 0A C4 83 00 64 28 52 9A 12 6F -- 082380
00 6A 00 6A 00 6A 00 6A EC 8B 55 57 56 CB 5E 5F -- 082390
00 CB 5E 5F C9 0A C4 83 00 64 28 52 9A 12 71 68 -- 0823A0
00 3C AE 54 00 3C 91 10 00 3C 91 0E 00 24 77 8E -- 0823B0
00 3C 86 9E 00 3C 91 18 00 3C B3 24 00 3C 86 9C -- 0823C0
00 3C 92 3C 00 3C 90 A0 00 3C 92 38 00 6C 30 64 -- 0823D0
00 3C 92 44 00 3C 90 A4 00 3C 92 40 00 3C 90 7A -- 0823E0
00 3C 90 FC 00 3C 86 A2 00 3C 90 FF 00 3C 90 7E -- 0823F0
90 DB 00 3C 90 C9 00 3C B3 10 00 3C AF 10 01 FE -- 082400
90 EA 00 3C 90 C6 00 3C 87 6E 00 3C 90 D8 00 3C -- 082410
91 3A 00 3C 91 32 00 3C 90 36 00 3C AE 60 00 3C -- 082420
28 74 00 3C 90 C2 00 3C 91 3E 00 3C 91 36 00 3C -- 082430
91 12 00 24 F4 7A 00 3C 91 14 00 3C 90 C4 00 6C -- 082440
90 98 00 3C 87 DE 00 3C 90 9C 00 3C 87 DA 00 3C -- 082450

77 96 00 3C 86 9A 00 3C B3 12 00 3C B1 10 00 3C -- 082460
30 4C 00 6C 30 66 00 6C 30 94 00 3C 90 ED 00 24 -- 082470
30 5E 00 3C 90 EB 00 6C 30 58 00 3C 86 F6 00 6C -- 082480
90 FE 00 6C 30 4E 00 3C 87 E2 00 3C 90 FD 00 6C -- 082490
75 00 3D 83 20 12 3E C5 2E EC 8B 55 57 56 00 3C -- 0824A0
56 CB 5E 5F C9 00 5C 75 BB 9A 00 54 1F AA 9A 05 -- 0824B0
00 5C D0 B3 9A 50 FF 74 86 8D 16 00 00 8C C8 57 -- 0824C0
20 16 3E C5 2E 00 7F 25 E4 2A BA 46 8A 04 C4 83 -- 0824D0
74 86 8D 16 64 6A 64 EC 83 50 D8 46 8D 16 05 89 -- 0824E0
C4 83 00 5C ED 6E 9A 50 00 08 05 C4 8B 16 50 FF -- 0824F0
3D 83 20 1A 3E C5 2E 68 C4 83 00 54 11 C5 9A 0A -- 082500
36 FF 2E 20 26 36 FF 2E 20 28 36 FF 2E 5B 74 00 -- 082510
34 FA 02 9A 50 D8 46 8D 16 20 22 36 FF 2E 20 24 -- 082520
27 74 00 3D 83 05 89 20 1E 3E C5 2E 0C C4 83 00 -- 082530
05 8B 20 1E 3E C5 2E 00 01 05 C7 20 2A 3E C5 2E -- 082540
00 86 E9 03 74 00 03 3D 00 89 E9 03 75 00 02 3D -- 082550
C5 2E 78 EB 00 5C 77 CF 9A 7F EB 00 54 1A 4C 9A -- 082560
74 00 3D 83 20 2E 3E C5 2E 00 02 05 C7 20 1E 3E -- 082570
26 36 FF 2E 20 28 36 FF 2E DA 66 D1 D8 66 D1 06 -- 082580
50 D8 46 8D 16 20 22 36 FF 2E 20 24 36 FF 2E 20 -- 082590
3E C5 2E 20 32 36 C4 2E 0C C4 83 00 64 26 2C 9A -- 0825A0
A7 73 00 5C ED 94 9A 1C DA 26 9B 05 D9 9B 20 22 -- 0825B0
DA 26 9B 05 D9 9B 20 26 3E C5 2E 20 36 36 C4 2E -- 0825C0
01 05 C7 20 2A 3E C5 2E 8F 73 00 5C ED 94 9A 1C -- 0825D0
EC 8B 55 57 56 CB 5E 5F C9 9B 00 54 12 29 9A 00 -- 0825E0
46 8B 02 45 89 10 46 8B 05 89 6E 7E C5 0E 46 8B -- 0825F0
12 46 D9 9B 06 45 89 0C 46 8B 04 45 89 0A 01 FE -- 082600
1A 46 D9 9B 0C 5D D9 9B 16 46 D9 9B 08 5D D9 9B -- 082610
22 46 D9 9B 14 5D D9 9B 1E 46 D9 9B 10 5D D9 9B -- 082620
26 46 D9 9B 1C 5D D9 9B 2A 46 D9 9B 18 5D D9 9B -- 082630
5E 5F C9 9B 24 5D D9 9B 2E 46 D9 9B 20 5D D9 9B -- 082640
00 01 F6 46 C7 00 F8 46 C6 00 00 5A C8 57 56 CB -- 082650
DF 46 C6 00 E1 46 C6 01 F2 46 C6 00 01 F4 46 C7 -- 082660
00 3D 83 20 2A 3E C5 2E D2 5E D9 9B E8 D9 9B 00 -- 082670
20 44 36 FF 2E 01 6A FF 6A 12 6A 05 6B E9 03 75 -- 082680
```

```
9A  20  3E  36  FF  2E  20  40  36  FF  2E  20  42  36  FF  2E  --  082690
FF  2E  20  3C  36  FF  2E  50  52  0C  C4  83  00  5C  93  FD  --  0826A0
20  46  3E  C5  2E  0A  C4  83  00  5C  ED  6E  9A  20  3A  36  --  0826B0
2E  02  C4  83  00  44  56  66  9A  35  FF  0A  74  00  3D  83  --  0826C0
05  89  20  4A  3E  C5  2E  02  55  8B  05  8B  20  3A  3E  C5  --  0826D0
73  04  B9  7E  80  00  B9  46  C6  00  B8  46  C6  02  55  89  --  0826E0
2E  20  52  36  03  2E  E6  D1  F0  8B  E4  2A  B9  46  8A  3A  --  0826F0
16  74  04  23  26  05  8B  20  4E  3E  C5  2E  20  54  06  8E  --  082700
46  8A  1F  16  FD  03  F8  8B  B8  46  FE  E4  2A  B8  46  8A  --  082710
20  32  3E  C5  2E  C0  EB  B9  46  FE  AE  45  88  E4  2A  B9  --  082720
FF  02  6A  00  6A  A8  56  89  A6  46  89  02  55  8B  05  8B  --  082730
13  A6  46  03  08  C4  83  00  5C  EE  D0  9A  35  FF  02  75  --  082740
05  D9  9B  20  22  3E  C5  2E  FE  56  89  FC  46  89  A8  56  --  082750
EE  46  89  08  C4  83  00  5C  EE  2F  9A  00  5C  ED  99  9A  --  082760
56  19  EE  46  29  99  05  8B  20  56  3E  C5  2E  F0  56  89  --  082770
20  5A  3E  C5  2E  B6  46  89  05  8B  20  12  3E  C5  2E  F0  --  082780
73  05  3B  37  7F  06  7C  02  55  3B  F0  56  8B  EE  46  8B  --  082790
55  1B  05  2B  F0  56  8B  EE  46  8B  20  5A  3E  C5  2E  33  --  0827A0
13  C3  03  99  05  8B  20  12  3E  C5  2E  CA  8B  D8  8B  02  --  0827B0
46  89  02  55  8B  05  8B  20  5A  3E  C5  2E  B6  46  89  D1  --  0827C0
32  3E  C5  2E  CA  8B  D8  8B  99  B6  46  8B  F0  56  89  EE  --  0827D0
7F  07  7C  F0  56  3B  D1  1B  C3  2B  02  55  8B  05  8B  20  --  0827E0
02  55  8B  05  8B  20  32  3E  C5  2E  13  73  EE  46  3B  18  --  0827F0

03  99  B6  46  8B  B6  46  89  F0  56  1B  EE  46  2B  01  FE  --  082800
56  89  EA  46  89  00  DA  83  00  01  2D  F0  56  13  EE  46  --  082810
FF  EA  76  FF  52  50  E2  46  8D  16  50  FA  46  8D  16  EC  --  082820
C0  2B  50  E4  2A  F2  46  88  00  02  B8  EE  76  FF  F0  76  --  082830
E4  2A  F8  46  8A  50  D2  46  8D  16  50  E4  2A  F3  46  88  --  082840
FF  20  4A  3E  C5  2E  50  E4  2A  F9  46  88  00  01  B8  50  --  082850
00  FA  7E  83  20  C4  83  00  2C  6F  1C  9A  35  FF  02  75  --  082860
C4  83  00  64  28  52  9A  FA  76  FF  01  6A  00  6A  0F  74  --  082870
2F  9A  00  5C  ED  99  9A  05  D9  9B  20  26  3E  C5  2E  06  --  082880
56  3E  C5  2E  E8  56  89  E6  46  89  08  C4  83  00  5C  EE  --  082890
8B  20  12  3E  C5  2E  E8  56  19  E6  46  29  99  05  8B  20  --  0828A0
3B  E8  56  8B  E6  46  8B  20  5E  3E  C5  2E  B4  46  89  05  --  0828B0
8B  20  5E  3E  C5  2E  33  73  05  3B  37  7F  06  7C  02  55  --  0828C0
C5  2E  CA  8B  D8  8B  02  55  1B  05  2B  E8  56  8B  E6  46  --  0828D0
3E  C5  2E  B4  46  89  D1  13  C3  03  99  05  8B  20  12  3E  --  0828E0
3E  C5  2E  E8  56  89  E6  46  89  02  55  8B  05  8B  20  5E  --  0828F0
05  8B  20  36  3E  C5  2E  CA  8B  D8  8B  99  05  8B  20  12  --  082900
46  3B  18  7F  07  7C  E8  56  3B  D1  1B  C3  2B  02  55  8B  --  082910
E6  46  2B  02  55  8B  05  8B  20  36  3E  C5  2E  13  73  E6  --  082920
E4  2A  DF  46  8A  50  FA  46  8D  16  B4  46  89  E8  56  1B  --  082930
E4  76  FF  E6  76  FF  E8  76  FF  50  E4  2A  E1  46  8A  50  --  082940
74  00  FA  7E  83  10  C4  83  00  2C  79  D7  9A  E2  76  FF  --  082950
06  C4  83  00  64  28  52  9A  FA  76  FF  01  6A  00  6A  0F  --  082960
05  3B  E4  2A  B9  46  8A  20  62  3E  C5  2E  00  B9  46  C6  --  082970
1F  16  FD  03  02  E7  C1  F8  8B  E4  2A  B9  46  8A  1A  73  --  082980
89  B4  46  8B  D8  EB  B9  46  FE  BA  5D  D9  9B  EE  D9  9B  --  082990
50  FA  46  8D  16  01  72  E9  03  7F  00  CE  7E  83  CE  46  --  0829A0
16  50  CC  46  8D  16  50  D6  46  8D  16  50  DA  46  8D  16  --  0829B0
83  00  2C  96  CF  9A  E2  76  FF  E4  76  FF  50  AA  46  8D  --  0829C0
9A  FA  76  FF  01  6A  00  6A  0F  74  00  FA  7E  83  18  C4  --  0829D0
89  0A  7D  CC  46  3B  CE  46  8B  06  C4  83  00  64  28  52  --  0829E0
83  CE  46  29  CC  46  8B  06  EB  00  00  CE  46  C7  CC  46  --  0829F0
3B  CA  46  8B  00  00  CA  46  C7  9D  7E  00  CC  7E  01  FE  --  082A00
20  62  3E  C5  2E  00  B9  46  C6  00  E6  E9  03  7C  B6  46  --  082A10
66  3E  C5  2E  00  CB  E9  03  72  05  3B  E4  2A  B9  46  8A  --  082A20
00  02  3D  05  8B  20  6A  3E  C5  2E  0C  74  00  3D  83  20  --  082A30
```

```
9A 50 52 99 E4 2A B9 46 8A 50 FC 46 8D 16 68 74 -- 082A40
D6 5E C5 A8 56 89 A6 46 89 08 C4 83 00 5C EE E8 -- 082A50
8B A8 56 13 A6 46 03 D2 2B C7 8B 3F 03 CA 7E 8B -- 082A60
8A E6 D1 F0 8B E4 2A 05 8A AC 5E 8E AA 7E 03 F8 -- 082A70
8B E4 2A AE 45 8A 1F 16 FD 03 F8 8B E4 2A B9 46 -- 082A80
FE 03 20 70 1E 8E 2E 20 6E 3E 03 2E 09 E7 C1 F8 -- 082A90
16 50 AE 46 8D 16 2D EB D0 46 89 00 FF 25 05 8B -- 082AA0
50 E4 2A B9 46 8A FC 76 FF FE 76 FF 50 D0 46 8D -- 082AB0
9A AA 76 FF AC 76 FF D6 76 FF D8 76 FF CA 76 FF -- 082AC0
E7 C1 F8 8B E4 2A B9 46 8A 18 C4 83 00 54 18 86 -- 082AD0
5D D9 9B BA 45 D8 9B D0 46 DF 9B 1F 16 FD 03 02 -- 082AE0
46 8D 16 FF 0F E9 CA 46 FF FF 24 E9 B9 46 FE BA -- 082AF0
5C EE E2 9A 50 52 99 05 8B 20 62 3E C5 2E 50 FC -- 082B00
8B FE E2 E9 CC 4E FF 05 01 D6 7E C5 08 C4 83 00 -- 082B10
62 3E C5 2E 00 B9 46 C6 B2 46 89 B6 6E F7 B4 46 -- 082B20
8B E4 2A B9 46 8A 32 73 05 3B E4 2A B9 46 8A 20 -- 082B30
B2 76 DE 9B BA 45 D9 9B 1F 16 FD 03 02 E7 C1 F8 -- 082B40
2E 20 72 3E 03 2E 02 E7 C1 F8 8B E4 2A B9 46 8A -- 082B50
6A 3E C5 2E C0 EB B9 46 FE 1D D9 9B 20 74 1E 8E -- 082B60
00 3D 83 20 76 3E C5 2E 3D 75 00 06 3D 05 8B 20 -- 082B70
74 00 3D 83 24 74 00 3D 83 20 66 3E C5 2E 33 75 -- 082B80
2E 20 7E 36 03 2E E6 D1 35 8B 20 16 3E C5 2E 24 -- 082B90

05 75 04 3B 26 05 8B 20 7A 3E C5 2E 20 80 06 8E -- 082BA0
FF 50 FA 46 8D 16 00 5C 76 66 9A 00 54 17 CD 9A -- 082BB0
FA 7E 83 08 C4 83 00 2C A0 F7 9A E2 76 FF E4 76 -- 082BC0
83 00 64 28 52 9A FA 76 FF 01 6A 00 6A 0F 74 00 -- 082BD0
5C 94 D5 9A 20 3A 36 FF 2E 20 3C 36 FF 2E 06 C4 -- 082BE0
C7 00 00 0C C8 57 56 CB 5E 5F C9 9B 04 C4 83 00 -- 082BF0
00 00 FA 46 C7 00 01 FC 46 C7 00 01 FE 46 01 FE -- 082C00
E7 C1 F4 7E 8B 37 7D 04 F4 7E 83 00 00 F4 46 C7 -- 082C10
2E 9B 05 D9 9B 20 74 1E 8E 2E 20 72 3E 03 2E 02 -- 082C20
C4 83 00 5C EE 14 9A 00 5C ED 99 9A 20 82 06 DC -- 082C30
F4 46 FF F6 45 88 F4 7E 03 1F 16 FD 8B E4 2A 08 -- 082C40
F7 46 8D 16 50 F8 46 8D 16 50 F9 46 8D 16 C3 EB -- 082C50
9A FC 76 FF FA 76 FF FE 76 FF 50 F6 46 8D 16 50 -- 082C60
04 F4 7E 83 00 00 F4 46 C7 16 C4 83 00 5C FC A8 -- 082C70
9A 50 E4 2A F6 45 8A F4 7E 03 1F 16 FD 8B 2D 7D -- 082C80
3E 03 2E 02 E7 C1 F4 7E 8B 02 C4 83 00 5C ED AF -- 082C90
9B CD EB F4 46 FF 1D D9 9B 20 74 1E 8E 2E 20 72 -- 082CA0
8B 20 8A 3E C5 2E 00 00 04 C8 57 56 CB 5E 5F C9 -- 082CB0
3D 83 20 8E 3E C5 2E 00 E5 E9 03 74 00 01 3D 05 -- 082CC0
2E E6 D1 35 8B 20 16 3E C5 2E 00 D8 E9 03 74 00 -- 082CD0
05 8B 20 7A 3E C5 2E 20 80 06 8E 2E 20 7E 36 03 -- 082CE0
52 D2 2B 14 46 8B 50 16 46 8D 16 5E 74 04 3B 26 -- 082CF0
C4 FE 56 89 FC 46 89 08 C4 83 00 5C EE E8 9A 50 -- 082D00
13 FC 46 03 D2 2B C1 8B 0F 03 26 12 4E 8B 0E 5E -- 082D10
F0 8B E4 2A 05 8A 0C 5E 8E 0A 7E 03 F8 8B FE 56 -- 082D20
8B E4 2A 05 8A 20 5E 8E 1E 7E 03 14 7E 8B E6 D1 -- 082D30
FE 03 20 70 1E 8E 2E 20 6E 3E 03 2E 09 E7 C1 F8 -- 082D40
9A 50 52 D2 2B 14 46 8B 50 16 46 8D 16 01 19 E9 -- 082D50
0E 5E C4 FE 56 89 FC 46 89 08 C4 83 00 5C EE E8 -- 082D60
FE 56 13 FC 46 03 D2 2B C1 8B 0F 03 26 12 4E 8B -- 082D70
E6 D1 F0 8B E4 2A 05 8A 0C 5E 8E 0A 7E 03 F8 8B -- 082D80
C1 F8 8B E4 2A 05 8A 20 5E 8E 1E 7E 03 14 7E 8B -- 082D90
C5 2E A0 EB 20 94 1E 8E 2E 20 92 3E 03 2E 09 E7 -- 082DA0
D1 3D 8B 20 16 3E C5 2E 1D 75 00 3D 83 20 8E 3E -- 082DB0
00 02 3D 05 8B 20 80 1E 8E 2E 20 7E 3E 03 2E E7 -- 082DC0
03 2E E7 D1 3D 8B 20 16 3E C5 2E FF 20 E9 03 75 -- 082DD0
E9 03 75 FF FF 3D 05 8B 20 98 1E 8E 2E 20 96 3E -- 082DE0
```

```
E8 9A 50 52 D2 2B 14 46 8B 50 16 46 8D 16 FF 61 -- 082DF0
5E C4 FE 56 89 FC 46 89 08 C4 83 00 5C EE 01 FE -- 082E00
56 13 FC 46 03 D2 2B C6 8B 37 03 26 12 76 8B 0E -- 082E10
8B E0 D1 E4 2A 05 8A 0C 5E 8E 0A 7E 03 F8 8B FE -- 082E20
2E 20 96 1E 03 2E E3 D1 1F 8B 20 16 1E C5 2E C8 -- 082E30
8E 2E 20 9A 36 03 2E 02 E6 C1 37 8B 20 98 1E 8E -- 082E40
E4 2A 05 8A 20 5E 8E 1E 7E 03 14 7E 8B 20 9C 06 -- 082E50
05 8B F9 03 02 5C 8E 26 3C 03 26 09 E7 C1 F8 8B -- 082E60
5A C8 57 56 CB 5E 5F C9 05 89 1A 7E C5 00 FF 25 -- 082E70
00 01 F4 46 C7 00 01 F6 46 C7 00 F8 46 C6 00 00 -- 082E80
9B E8 D9 9B 00 DF 46 C6 00 E1 46 C6 01 F2 46 C6 -- 082E90
04 DD E9 03 75 00 3D 83 20 2A 3E C5 2E D2 5E D9 -- 082EA0
20 A2 36 FF 2E 20 A4 36 FF 2E 01 6A FF 6A 12 6A -- 082EB0
83 00 5C 93 FD 9A 20 9E 36 FF 2E 20 A0 36 FF 2E -- 082EC0
6E 9A 20 3A 36 FF 2E 20 3C 36 FF 2E 50 52 0C C4 -- 082ED0
0A 74 00 3D 83 20 46 3E C5 2E 0A C4 83 00 5C ED -- 082EE0
8B 20 3A 3E C5 2E 02 C4 83 00 44 85 56 9A 35 FF -- 082EF0
46 C6 02 55 89 05 89 20 4A 3E C5 2E 02 55 8B 05 -- 082F00
2A B9 46 8A 3A 73 04 B9 7E 80 00 B9 46 C6 00 B8 -- 082F10
2E 20 54 06 8E 2E 20 52 36 03 2E E6 D1 F0 8B E4 -- 082F20
E4 2A B8 46 8A 16 74 04 23 26 05 8B 20 A6 3E C5 -- 082F30

45 88 E4 2A B9 46 8A 1F 16 FD 03 F8 8B B8 46 FE -- 082F40
02 55 8B 05 8B 20 AA 3E C5 2E C0 EB B9 46 FE AE -- 082F50
9A 35 FF 02 75 FF 02 6A 00 6A A8 56 89 A6 46 89 -- 082F60
FC 46 89 A8 56 13 A6 46 03 08 C4 83 00 5C EE D0 -- 082F70
00 5C ED 99 9A 05 D9 9B 20 22 3E C5 2E FE 56 89 -- 082F80
C5 2E F0 56 89 EE 46 89 08 C4 83 00 5C EE 2F 9A -- 082F90
12 3E C5 2E F0 56 19 EE 46 29 99 05 8B 20 56 3E -- 082FA0
56 8B EE 46 8B 20 AE 3E C5 2E B6 46 89 05 8B 20 -- 082FB0
AE 3E C5 2E 33 73 05 3B 37 7F 06 7C 02 55 3B F0 -- 082FC0
CA 8B D8 8B 02 55 1B 05 2B F0 56 8B EE 46 8B 20 -- 082FD0
2E B6 46 89 D1 13 C3 03 99 05 8B 20 12 3E C5 2E -- 082FE0
8B F0 56 89 EE 46 89 02 55 8B 05 8B 20 AE 3E C5 -- 082FF0
05 8B 20 AA 3E C5 2E CA 8B D8 8B 99 B6 46 01 FE -- 083000
46 3B 18 7F 07 7C F0 56 3B D1 1B C3 2B 02 55 8B -- 083010
EE 46 2B 02 55 8B 05 8B 20 AA 3E C5 2E 13 73 EE -- 083020
F0 56 13 EE 46 03 99 B6 46 8B B6 46 89 F0 56 1B -- 083030
FA 46 8D 16 EC 56 89 EA 46 89 00 DA 83 00 01 2D -- 083040
EE 76 FF F0 76 FF EA 76 FF 52 50 E2 46 8D 16 50 -- 083050
E4 2A F3 46 88 C0 2B 50 E4 2A F2 46 88 00 02 B8 -- 083060
88 00 01 B8 50 E4 2A F8 46 8A 50 D2 46 8D 16 50 -- 083070
9A 35 FF 02 75 FF 20 4A 3E C5 2E 50 E4 2A F9 46 -- 083080
6A 00 6A 0F 74 00 FA 7E 83 20 C4 83 00 2C 6F 1C -- 083090
26 3E C5 2E 06 C4 83 00 64 28 52 9A FA 76 FF 01 -- 0830A0
C4 83 00 5C EE 2F 9A 00 5C ED 99 9A 05 D9 9B 20 -- 0830B0
29 99 05 8B 20 56 3E C5 2E E8 56 89 E6 46 89 08 -- 0830C0
2E B4 46 89 05 8B 20 12 3E C5 2E E8 56 19 E6 46 -- 0830D0
7F 06 7C 02 55 3B E8 56 8B E6 46 8B 20 B2 3E C5 -- 0830E0
E8 56 8B E6 46 8B 20 B2 3E C5 2E 33 73 05 3B 37 -- 0830F0
05 8B 20 12 3E C5 2E CA 8B D8 8B 02 55 1B 05 2B -- 083100
8B 05 8B 20 B2 3E C5 2E B4 46 89 D1 13 C3 03 99 -- 083110
99 05 8B 20 12 3E C5 2E E8 56 89 E6 46 89 02 55 -- 083120
C3 2B 02 55 8B 05 8B 20 B6 3E C5 2E CA 8B D8 8B -- 083130
C5 2E 13 73 E6 46 3B 18 7F 07 7C E8 56 3B D1 1B -- 083140
46 89 E8 56 1B E6 46 2B 02 55 8B 05 8B 20 B6 3E -- 083150
2A E1 46 8A 50 E4 2A DF 46 8A 50 FA 46 8D 16 B4 -- 083160
D7 9A E2 76 FF E4 76 FF E6 76 FF E8 76 FF 50 E4 -- 083170
01 6A 00 6A 0F 74 00 FA 7E 83 10 C4 83 00 2C 79 -- 083180
2E 00 B9 46 C6 06 C4 83 00 64 28 52 9A FA 76 FF -- 083190
```

579

EP 0 533 348 A2

```
B9  46  8A  1A  73  05  3B  E4  2A  B9  46  8A  20  62  3E  C5  --  0831A0
D9  9B  EE  D9  9B  1F  16  FD  03  02  E7  C1  F8  8B  E4  2A  --  0831B0
CE  7E  83  CE  46  89  B4  46  8B  D8  EB  B9  46  FE  BA  5D  --  0831C0
50  DA  46  8D  16  50  FA  46  8D  16  01  2D  E9  03  7F  00  --  0831D0
FF  50  AA  46  8D  16  50  CC  46  8D  16  50  D6  46  8D  16  --  0831E0
FA  7E  83  18  C4  83  00  2C  96  CF  9A  E2  76  FF  E4  76  --  0831F0
64  28  52  9A  FA  76  FF  01  6A  00  6A  0F  74  00  01  FE  --  083200
C7  CC  46  89  0A  7D  CC  46  3B  CE  46  8B  06  C4  83  00  --  083210
00  CC  7E  83  CE  46  29  CC  46  8B  06  EB  00  00  CE  46  --  083220
E9  03  7C  B6  46  3B  CA  46  8B  00  00  CA  46  C7  9D  7E  --  083230
E4  2A  B9  46  8A  20  62  3E  C5  2E  00  B9  46  C6  00  A1  --  083240
2A  B9  46  8A  50  FC  46  8D  16  00  86  E9  03  72  05  3B  --  083250
89  A6  46  89  08  C4  83  00  5C  EE  E8  9A  50  52  99  E4  --  083260
46  03  D2  2B  C7  8B  3F  03  CA  7E  8B  D6  5E  C5  A8  56  --  083270
E4  2A  05  8A  AC  5E  8E  AA  7E  03  F8  8B  A8  56  13  A6  --  083280
8A  1F  16  FD  03  F8  8B  E4  2A  B9  46  8A  E6  D1  F0  8B  --  083290
8E  2E  20  6E  3E  03  2E  09  E7  C1  F8  8B  E4  2A  AE  45  --  0832A0
B9  46  8A  D0  46  89  00  FF  25  05  8B  FE  03  20  70  1E  --  0832B0
9B  D0  46  DF  9B  1F  16  FD  03  02  E7  C1  F8  8B  E4  2A  --  0832C0
CA  46  FF  FF  69  E9  B9  46  FE  BA  5D  D9  9B  BA  45  D8  --  0832D0

99  05  8B  20  62  3E  C5  2E  50  FC  46  8D  16  FF  54  E9  --  0832E0
FF  05  01  D6  7E  C5  08  C4  83  00  5C  EE  E2  9A  50  52  --  0832F0
46  C6  B2  46  89  B6  6E  F7  B4  46  8B  FF  27  E9  CC  4E  --  083300
32  73  05  3B  E4  2A  B9  46  8A  20  62  3E  C5  2E  00  B9  --  083310
D9  9B  1F  16  FD  03  02  E7  C1  F8  8B  E4  2A  B9  46  8A  --  083320
02  E7  C1  F8  8B  E4  2A  B9  46  8A  B2  76  DE  9B  BA  45  --  083330
B9  46  FE  1D  D9  9B  20  74  1E  8E  2E  20  72  3E  03  2E  --  083340
FF  E4  76  FF  50  FA  46  8D  16  00  5C  76  66  9A  C0  EB  --  083350
0F  74  00  FA  7E  83  08  C4  83  00  2C  A0  F7  9A  E2  76  --  083360
2E  06  C4  83  00  64  28  52  9A  FA  76  FF  01  6A  00  6A  --  083370
C4  83  00  5C  94  D5  9A  20  3A  36  FF  2E  20  3C  36  FF  --  083380
20  12  3E  C5  2E  EC  8B  55  57  56  CB  5E  5F  C9  9B  04  --  083390
3E  C5  2E  00  00  05  C7  20  56  3E  C5  2E  00  01  05  C7  --  0833A0
2E  EC  8B  55  57  56  CB  5E  5F  C9  00  01  05  C7  20  BA  --  0833B0
01  05  C7  20  56  3E  C5  2E  00  03  05  C7  20  12  3E  C5  --  0833C0
57  56  CB  5E  5F  C9  00  09  05  C7  20  BA  3E  C5  2E  00  --  0833D0
56  3E  C5  2E  00  05  05  C7  20  12  3E  C5  2E  EC  8B  55  --  0833E0
5F  C9  00  19  05  C7  20  BA  3E  C5  2E  00  02  05  C7  20  --  0833F0
05  C7  20  12  3E  C5  2E  EC  8B  55  57  56  CB  5E  01  FE  --  083400
20  BA  3E  C5  2E  00  04  05  C7  20  56  3E  C5  2E  00  09  --  083410
3E  C5  2E  EC  8B  55  57  56  CB  5E  5F  C9  00  51  05  C7  --  083420
9A  00  00  05  C7  20  2A  3E  C5  2E  00  00  05  C7  20  12  --  083430
00  6C  32  48  00  6C  32  20  CB  5E  5F  C9  00  5C  78  6E  --  083440
00  6C  32  44  00  6C  32  40  00  6C  32  36  00  3C  AE  54  --  083450
00  3C  91  7C  00  3C  91  80  00  3C  B3  1A  00  6C  32  22  --  083460
00  6C  32  32  00  3C  86  F6  00  3C  86  A2  00  6C  32  24  --  083470
00  6C  32  3C  00  6C  2E  EC  00  3C  91  4E  00  6C  32  38  --  083480
00  3C  91  14  00  3C  91  4A  00  3C  91  84  00  3C  91  88  --  083490
00  24  31  70  00  6C  2E  FC  00  3C  6E  86  00  3C  86  9A  --  0834A0
3F  E0  00  00  00  00  00  00  3C  AF  10  00  24  77  8E  --  0834B0
00  24  55  BC  00  24  4D  5C  00  3C  A5  4C  00  24  57  BC  --  0834C0
00  3C  93  F0  00  3C  95  62  00  3C  95  0E  00  24  57  C0  --  0834D0
00  3C  94  1E  00  3C  94  26  00  3C  94  2A  00  3C  94  22  --  0834E0
3D  83  2E  BE  3E  C5  2E  EC  8B  55  57  56  00  6C  32  3E  --  0834F0
00  05  C7  2E  BE  3E  C5  2E  00  54  A5  FF  9A  20  74  00  --  083500
00  14  F4  F5  9A  2E  C2  36  FF  2E  2E  C4  36  FF  2E  00  --  083510
3E  C5  2E  00  00  0A  C8  57  56  CB  5E  5F  C9  04  C4  83  --  083520
CA  06  8B  2E  2E  CC  36  FF  2E  1F  74  00  3D  83  2E  C6  --  083530
3E  C5  2E  04  C4  83  00  64  15  E0  9A  50  00  03  05  2E  --  083540
```

580

```
2E  CE  3E  C5  2E  00  54  20  BE  9A  00  00  05  C7  2E  C6  --  083550
7E  83  F6  46  FF  03  EB  00  00  F6  46  C7  00  04  05  C7  --  083560
2E  2E  D2  3E  03  2E  02  E7  C1  F6  7E  8B  2E  74  04  F6  --  083570
5C  ED  F9  9A  00  5C  ED  99  9A  05  D9  9B  2E  D4  1E  8E  --  083580
F8  45  89  1F  16  FD  03  E7  D1  F6  7E  8B  08  C4  83  00  --  083590
D8  36  FF  2E  2E  DA  36  FF  2E  2E  DC  36  FF  2E  C9  EB  --  0835A0
FF  2E  08  C4  83  00  5C  97  5E  9A  2E  D6  36  FF  2E  2E  --  0835B0
36  FF  2E  2E  D8  36  FF  2E  2E  DE  36  FF  2E  2E  E0  36  --  0835C0
2E  2E  E4  36  FF  2E  08  C4  83  00  64  5B  B4  9A  2E  D6  --  0835D0
16  05  2E  D6  06  8B  2E  2E  D8  36  FF  2E  2E  E2  36  FF  --  0835E0
FF  2E  EA  3E  C5  2E  08  C4  83  00  5C  97  5E  9A  50  00  --  0835F0
EA  3E  C5  2E  04  75  FF  2E  EA  3E  C5  2E  06  75  01  FE  --  083600
2E  E8  36  FF  2E  35  FF  2E  EA  3E  C5  2E  02  75  FF  2E  --  083610
05  2E  D6  06  8B  2E  2E  D8  36  FF  2E  2E  E6  36  FF  2E  --  083620
2E  F0  36  FF  2E  10  C4  83  00  5C  97  5E  9A  50  00  16  --  083630
05  2E  D6  06  8B  2E  2E  D8  36  FF  2E  2E  EE  36  FF  2E  --  083640
2E  EA  3E  C5  2E  08  C4  83  00  5C  97  5E  9A  50  00  2C  --  083650
2E  EA  3E  C5  2E  0E  75  FF  2E  EA  3E  C5  2E  10  75  FF  --  083660
2E  F4  36  FF  2E  0A  75  FF  2E  EA  3E  C5  2E  0C  75  FF  --  083670

05  2E  D6  06  8B  2E  2E  D8  36  FF  2E  2E  F2  36  FF  2E  --  083680
2E  F8  36  FF  2E  10  C4  83  00  5C  97  5E  9A  50  00  2C  --  083690
05  2E  D6  06  8B  2E  2E  D8  36  FF  2E  2E  F6  36  FF  2E  --  0836A0
76  FF  FE  76  FF  08  C4  83  00  5C  97  5E  9A  50  00  42  --  0836B0
FA  36  FF  2E  2E  FC  36  FF  2E  F8  76  FF  FA  76  FF  FC  --  0836C0
9A  50  00  42  05  2E  D6  06  8B  2E  2E  D8  36  FF  2E  2E  --  0836D0
FE  36  FF  2E  2F  00  36  FF  2E  10  C4  83  00  5C  97  5E  --  0836E0
9A  50  00  58  05  2E  D6  06  8B  2E  2E  D8  36  FF  2E  2E  --  0836F0
02  36  FF  2E  2F  04  36  FF  2E  08  C4  83  00  5C  97  5E  --  083700
9A  50  00  58  05  2E  D6  06  8B  2E  2E  D8  36  FF  2E  2F  --  083710
06  36  FF  2E  2F  08  36  FF  2E  08  C4  83  00  64  5B  B4  --  083720
9A  50  00  6E  05  2E  D6  06  8B  2E  2E  D8  36  FF  2E  2F  --  083730
75  4D  3D  80  2F  0A  3E  C5  2E  08  C4  83  00  5C  97  5E  --  083740
2E  2F  10  36  FF  2E  00  07  45  C6  2F  0E  3E  C5  2E  4F  --  083750
5C  ED  99  9A  05  D9  9B  2F  16  3E  C5  2E  2F  0E  36  FF  --  083760
FF  2E  00  5C  ED  99  9A  08  C4  83  00  64  53  E8  9A  00  --  083770
06  8B  2E  2E  D8  36  FF  2E  2F  12  36  FF  2E  2F  14  36  --  083780
4D  EB  14  C4  83  00  5C  97  5E  9A  50  00  6E  05  2E  D6  --  083790
FF  2E  2F  10  36  FF  2E  00  05  45  C6  2F  0E  3E  C5  2E  --  0837A0
00  5C  ED  99  9A  05  D9  9B  2F  16  3E  C5  2E  2F  0E  36  --  0837B0
36  FF  2E  00  5C  ED  99  9A  08  C4  83  00  64  53  E8  9A  --  0837C0
D6  06  8B  2E  2E  D8  36  FF  2E  2F  1A  36  FF  2E  2F  1C  --  0837D0
2E  00  6A  14  C4  83  00  5C  97  5E  9A  50  00  6E  05  2E  --  0837E0
35  FF  2E  C2  3E  C5  2E  2E  D6  36  FF  2E  2E  D8  36  FF  --  0837F0
FF  2E  C2  3E  C5  2E  08  C4  83  00  14  F5  9B  9A  01  FE  --  083800
57  56  CB  5E  5F  C9  9B  02  C4  83  00  14  FA  45  9A  35  --  083810
03  74  00  04  3D  05  8B  2E  CE  3E  C5  2E  00  00  0A  C8  --  083820
FF  2E  2F  20  36  FF  2E  02  17  E9  0A  46  8B  02  60  E9  --  083830
00  16  05  2E  D6  06  8B  2E  2E  D8  36  FF  2E  2F  1E  36  --  083840
75  FF  2E  EA  3E  C5  2E  08  C4  83  00  5C  97  5E  9A  50  --  083850
75  FF  2E  EA  3E  C5  2E  04  75  FF  2E  EA  3E  C5  2E  06  --  083860
36  FF  2E  2F  24  36  FF  2E  35  FF  2E  EA  3E  C5  2E  02  --  083870
50  00  16  05  2E  D6  06  8B  2E  2E  D8  36  FF  2E  2F  22  --  083880
36  FF  2E  2F  28  36  FF  2E  10  C4  83  00  5C  97  5E  9A  --  083890
50  00  2C  05  2E  D6  06  8B  2E  2E  D8  36  FF  2E  2F  26  --  0838A0
10  75  FF  2E  EA  3E  C5  2E  08  C4  83  00  5C  97  5E  9A  --  0838B0
0C  75  FF  2E  EA  3E  C5  2E  0E  75  FF  2E  EA  3E  C5  2E  --  0838C0
36  FF  2E  2F  2C  36  FF  2E  0A  75  FF  2E  EA  3E  C5  2E  --  0838D0
50  00  2C  05  2E  D6  06  8B  2E  2E  D8  36  FF  2E  2F  2A  --  0838E0
00  00  F6  46  C7  01  6E  E9  10  C4  83  00  5C  97  5E  9A  --  0838F0
```

```
E7 C1 F6 7E 8B 2E 74 04 F6 7E 83 F6 46 FF 03 EB -- 083900
99 9A 05 D9 9B 2E D4 1E 8E 2E 2E D2 3E 03 2E 02 -- 083910
E7 D1 F6 7E 8B 08 C4 83 00 5C ED F9 9A 00 5C ED -- 083920
FF 2E 2F 30 36 FF 2E C9 EB F8 45 89 1F 16 FD 03 -- 083930
00 42 05 2E D6 06 8B 2E 2E D8 36 FF 2E 2F 2E 36 -- 083940
FF FC 76 FF FE 76 FF 08 C4 83 00 5C 97 5E 9A 50 -- 083950
2E 2F 32 36 FF 2E 2F 34 36 FF 2E F8 76 FF FA 76 -- 083960
97 5E 9A 50 00 42 05 2E D6 06 8B 2E 2E D8 36 FF -- 083970
36 FF 2E 2F 38 36 FF 2E 00 E1 E9 10 C4 83 00 5C -- 083980
50 00 6E 05 2E D6 06 8B 2E 2E D8 36 FF 2E 2F 36 -- 083990
4D 3D 80 2F 0A 3E C5 2E 08 C4 83 00 5C 97 5E 9A -- 0839A0
2F 10 36 FF 2E 00 07 45 C6 2F 0E 3E C5 2E 4F 75 -- 0839B0
ED 99 9A 05 D9 9B 2F 16 3E C5 2E 2F 0E 36 FF 2E -- 0839C0
2E 00 5C ED 99 9A 08 C4 83 00 64 53 E8 9A 00 5C -- 0839D0
8B 2E 2E D8 36 FF 2E 2F 3A 36 FF 2E 2F 3C 36 FF -- 0839E0
EB 14 C4 83 00 5C 97 5E 9A 50 00 6E 05 2E D6 06 -- 0839F0
10 36 FF 2E 00 05 45 C6 2F 0E 3E C5 2E 68 01 FE -- 083A00
99 9A 05 D9 9B 2F 16 3E C5 2E 2F 0E 36 FF 2E 2F -- 083A10

00 5C ED 99 9A 08 C4 83 00 64 53 E8 9A 00 5C ED -- 083A20
2E 2E D8 36 FF 2E 2F 3E 36 FF 2E 2F 40 36 FF 2E -- 083A30
14 C4 83 00 5C 97 5E 9A 50 00 6E 05 2E D6 06 8B -- 083A40
25 A7 FF 2E D8 8B E0 D1 13 77 00 04 3D 48 19 EB -- 083A50
36 FF 2E 00 6A 25 4E 26 2F 24 C1 26 2F 23 FF 26 -- 083A60
9B 9A 35 FF 2E C2 3E C5 2E 2E D6 36 FF 2E 2E D8 -- 083A70
FA 45 9A 35 FF 2E C2 3E C5 2E 08 C4 83 00 14 F5 -- 083A80
00 00 10 C8 57 56 CB 5E 5F C9 9B 02 C4 83 00 14 -- 083A90
2E 2E CC 36 FF 2E 1F 74 00 3D 83 2E C6 3E C5 2E -- 083AA0
04 C4 83 00 64 15 E0 9A 50 00 03 05 2E CA 06 8B -- 083AB0
C5 2E 00 54 20 BE 9A 00 00 05 C7 2E C6 3E C5 2E -- 083AC0
75 4D 3D 80 2F 0A 3E C5 2E 00 01 05 C7 2E CE 3E -- 083AD0
2F 48 36 FF 2E 00 02 12 45 C7 2F 42 3E C5 2E 28 -- 083AE0
9A 2E D6 36 FF 2E 2E D8 36 FF 2E 2F 46 36 FF 2E -- 083AF0
45 C7 2F 42 3E C5 2E 26 EB 08 C4 83 00 5C 97 5E -- 083B00
36 FF 2E 2F 4A 36 FF 2E 2F 4C 36 FF 2E 00 04 12 -- 083B10
2E 08 C4 83 00 5C 97 5E 9A 2E D6 36 FF 2E 2E D8 -- 083B20
50 F0 46 8D 16 57 56 1C 74 00 3D 83 2F 4E 3E C5 -- 083B30
5C FE EC 9A 10 6A 2F 52 36 FF 2E 2F 54 36 FF 2E -- 083B40
5E D9 9B 05 D9 9B 2F 56 3E C5 2E 42 EB 5E 5F 00 -- 083B50
36 C4 2E F8 5E D9 9B 05 D9 9B 2F 5A 3E C5 2E F0 -- 083B60
D9 9B 04 D8 26 9B 05 D9 9B 2F 56 3E C5 2E 2F 5E -- 083B70
9B 05 D9 9B 2F 5A 3E C5 2E 2F 62 36 C4 2E F4 5E -- 083B80
66 36 FF 2E 2F 68 36 FF 2E FC 5E D9 9B 04 D8 26 -- 083B90
9A 50 00 16 05 2E D6 06 8B 2E 2E D8 36 FF 2E 2F -- 083BA0
00 5C ED 99 9A F0 46 D9 9B 08 C4 83 00 5C 97 5E -- 083BB0
46 D9 9B 00 5C ED 99 9A 08 C4 83 00 64 53 E8 9A -- 083BC0
99 9A 08 C4 83 00 64 53 E8 9A 00 5C ED 99 9A F8 -- 083BD0
36 FF 2E 2F 6A 36 FF 2E 2F 6C 36 FF 2E 00 5C ED -- 083BE0
00 5C 97 5E 9A 50 00 16 05 2E D6 06 8B 2E 2E D8 -- 083BF0
2E 2F 6E 36 FF 2E 2F 70 36 FF 2E 18 C4 83 01 FE -- 083C00
97 5E 9A 50 00 2C 05 2E D6 06 8B 2E 2E D8 36 FF -- 083C10
E8 9A 00 5C ED 99 9A F4 46 D9 9B 08 C4 83 00 5C -- 083C20
9A FC 46 D9 9B 00 5C ED 99 9A 08 C4 83 00 64 53 -- 083C30
5C ED 99 9A 08 C4 83 00 64 53 E8 9A 00 5C ED 99 -- 083C40
2E D8 36 FF 2E 2F 72 36 FF 2E 2F 74 36 FF 2E 00 -- 083C50
C4 83 00 5C 97 5E 9A 50 00 2C 05 2E D6 06 8B 2E -- 083C60
2E D8 36 FF 2E 2F 76 36 FF 2E 2F 78 36 FF 2E 18 -- 083C70
C4 83 00 5C 97 5E 9A 50 00 42 05 2E D6 06 8B 2E -- 083C80
E8 9A 00 5C ED 99 9A F0 66 D8 9B F4 46 D9 9B 08 -- 083C90
9B FC 46 D9 9B 00 5C ED 99 9A 08 C4 83 00 64 53 -- 083CA0
```

582

```
08 C4 83 00 64 53 E8 9A 00 5C ED 99 9A F8 66 D8 -- 083CB0
2E 2F 7A 36 FF 2E 2F 7C 36 FF 2E 00 5C ED 99 9A -- 083CC0
97 5E 9A 50 00 42 05 2E D6 06 8B 2E 2E D8 36 FF -- 083CD0
2E 2F 7E 36 FF 2E 2F 80 36 FF 2E 18 C4 83 00 5C -- 083CE0
97 5E 9A 50 00 58 05 2E D6 06 8B 2E 2E D8 36 FF -- 083CF0
ED 99 9A 05 D9 9B 2F 86 3E C5 2E 08 C4 83 00 5C -- 083D00
2E 00 5C ED 99 9A 08 C4 83 00 64 54 18 9A 00 5C -- 083D10
64 54 18 9A 00 5C ED 99 9A 05 D9 9B 2F 86 3E C5 -- 083D20
FF 2E 2F 84 36 FF 2E 00 5C ED 99 9A 08 C4 83 00 -- 083D30
00 58 05 2E D6 06 8B 2E 2E D8 36 FF 2E 2F 82 36 -- 083D40
FF 2E 2F 8C 36 FF 2E 18 C4 83 00 5C 97 5E 9A 50 -- 083D50
00 6E 05 2E D6 06 8B 2E 2E D8 36 FF 2E 2F 8A 36 -- 083D60
8B 2E 2F 94 36 FF 2E 08 C4 83 00 5C 97 5E 9A 50 -- 083D70
8E 36 FF 2E 2F 90 36 FF 2E 50 00 57 05 2F 92 06 -- 083D80
9A 50 00 6E 05 2E D6 06 8B 2E 2E D8 36 FF 2E 2F -- 083D90
42 36 FF 2E 2F 44 36 FF 2E 0C C4 83 00 5C 97 5E -- 083DA0
3E C5 2E 2E D6 36 FF 2E 2E D8 36 FF 2E 01 6A 2F -- 083DB0

C2 3E C5 2E 0C C4 83 00 14 F5 9B 9A 35 FF 2E C2 -- 083DC0
CB 5E 5F C9 9B 02 C4 83 00 14 FA 45 9A 35 FF 2E -- 083DD0
75 00 01 3D 05 8B 2E CE 3E C5 2E EC 8B 55 57 56 -- 083DE0
56 EC 8B 55 57 56 CB 5E 5F C9 00 54 26 5E 9A 05 -- 083DF0
68 00 6A 2F 42 36 FF 2E 2F 44 36 FF 2E 57 01 FE -- 083E00
45 C7 2F 42 3E C5 2E 5E 5F 00 8C 00 02 9A 00 9C -- 083E10
42 3E C5 2E 00 01 05 C7 2F 42 3E C5 2E 00 01 08 -- 083E20
00 04 12 45 C7 2F 42 3E C5 2E 00 00 0A 45 C7 2F -- 083E30
84 68 20 6A 2E D6 36 FF 2E 2E D8 36 FF 2E 57 56 -- 083E40
4D 3D 80 2F 0A 3E C5 2E 5E 5F 00 8C 00 02 9A 00 -- 083E50
98 36 FF 2E 00 02 12 45 C7 2F 42 3E C5 2E 28 75 -- 083E60
2E D6 36 FF 2E 2E D8 36 FF 2E 2F 96 36 FF 2E 2F -- 083E70
C7 2F 42 3E C5 2E 26 EB 08 C4 83 00 5C 97 5E 9A -- 083E80
FF 2E 2F 9A 36 FF 2E 2F 9C 36 FF 2E 00 04 12 45 -- 083E90
08 C4 83 00 5C 97 5E 9A 2E D6 36 FF 2E 2E D8 36 -- 083EA0
2E 2E D8 36 FF 2E 2F 9E 36 FF 2E 2F A0 36 FF 2E -- 083EB0
08 C4 83 00 5C 97 5E 9A 50 00 16 05 2E D6 06 8B -- 083EC0
64 53 E8 9A 00 5C ED 99 9A 44 45 D9 9B 0A 7E C5 -- 083ED0
48 45 D9 9B 0A 7E C5 00 5C ED 99 9A 08 C4 83 00 -- 083EE0
ED 99 9A 08 C4 83 00 64 53 E8 9A 00 5C ED 99 9A -- 083EF0
D8 36 FF 2E 2F A2 36 FF 2E 2F A4 36 FF 2E 00 5C -- 083F00
83 00 5C 97 5E 9A 50 00 16 05 2E D6 06 8B 2E 2E -- 083F10
D8 36 FF 2E 2F A6 36 FF 2E 2F A8 36 FF 2E 18 C4 -- 083F20
83 00 5C 97 5E 9A 50 00 2C 05 2E D6 06 8B 2E 2E -- 083F30
18 9A 00 5C ED 99 9A 62 45 D9 9B 0A 7E C5 08 C4 -- 083F40
D9 9B 0A 7E C5 00 5C ED 99 9A 08 C4 83 00 64 54 -- 083F50
9A 08 C4 83 00 64 54 18 9A 00 5C ED 99 9A 66 45 -- 083F60
FF 2E 2F AA 36 FF 2E 2F AC 36 FF 2E 00 5C ED 99 -- 083F70
5C 97 5E 9A 50 00 2C 05 2E D6 06 8B 2E 2E D8 36 -- 083F80
83 00 54 2B AD 9A 0A 76 FF 0C 76 FF 18 C4 83 00 -- 083F90
9A 05 EB 00 54 2C F6 9A 07 74 00 0E 7E 83 04 C4 -- 083FA0
01 6A 2F 42 36 FF 2E 2F 44 36 FF 2E 00 54 2D 9E -- 083FB0
FF 2E C2 3E C5 2E 2E D6 36 FF 2E 2E D8 36 FF 2E -- 083FC0
35 FF 2E C2 3E C5 2E 0C C4 83 00 14 F5 9B 9A 35 -- 083FD0
C8 57 56 CB 5E 5F C9 9B 02 C4 83 00 14 FA 45 9A -- 083FE0
04 C4 83 00 34 EE 9B 9A 50 F0 46 8D 16 00 00 30 -- 083FF0
9B 04 C4 83 00 34 ED BA 9A 50 E0 46 8D 16 01 FE -- 084000
D9 9B 0A 7E C5 D0 5E DD 9B F0 66 D8 9B F4 46 D9 -- 084010
D8 9B FC 46 D9 9B DC 5E D9 9B D0 4E DC 9B 62 45 -- 084020
4E DC 9B 66 45 D9 9B 0A 7E C5 D0 5E DD 9B F8 66 -- 084030
E4 46 D9 9B D0 5E DD 9B E8 D9 9B D8 5E D9 9B D0 -- 084040
DC 5E D9 9B DC 76 D8 9B D0 46 DC 9B E0 66 D8 9B -- 084050
```

583

```
9B E8 66 D8 9B EC 46 D9 9B D0 5E DD 9B E8 D9 9B -- 084060
9B DC 46 D9 9B D8 5E D9 9B D8 76 D8 9B D0 46 DC -- 084070
DC 2E 9B D8 46 D9 9B DC 5E D9 9B 2F AE 0E DC 2E -- 084080
B6 36 FF 2E 2F B8 36 FF 2E D8 5E D9 9B 2F AE 0E -- 084090
9A 50 00 42 05 2E D6 06 8B 2E 2E D8 36 FF 2E 2F -- 0840A0
D9 9B D0 5E DD 9B E8 D9 9B 08 C4 83 00 5C 97 5E -- 0840B0
46 D9 9B 34 72 00 5C ED 94 9A D0 5E DC 9B D8 46 -- 0840C0
2E 00 5C ED 99 9A D8 46 D9 9B 00 5C ED 99 9A DC -- 0840D0
8B 2E 2E D8 36 FF 2E 2F BA 36 FF 2E 2F BC 36 FF -- 0840E0
EB 18 C4 83 00 5C 97 5E 9A 50 00 42 05 2E D6 06 -- 0840F0
99 9A D8 46 D9 9B 00 5C ED 99 9A DC 46 D9 9B 32 -- 084100
36 FF 2E 2F BE 36 FF 2E 2F C0 36 FF 2E 00 5C ED -- 084110
00 5C 97 5E 9A 50 00 42 05 2E D6 06 8B 2E 2E D8 -- 084120
36 FF 2E EC 8B 55 57 56 CB 5E 5F C9 9B 18 C4 83 -- 084130
D6 06 8B 2E 2E D8 36 FF 2E 2F C2 36 FF 2E 2F C4 -- 084140
36 FF 2E 08 C4 83 00 5C 97 5E 9A 50 00 58 05 2E -- 084150

C6 36 FF 2E 2F C8 36 FF 2E 2F CA 36 FF 2E 2F CC -- 084160
9A 50 00 58 05 2E D6 06 8B 2E 2E D8 36 FF 2E 2F -- 084170
9A 05 D9 9B 2F D6 3E C5 2E 0C C4 83 00 5C 97 5E -- 084180
5C ED 99 9A 08 C4 83 00 64 54 18 9A 00 5C ED 99 -- 084190
18 9A 00 5C ED 99 9A 05 D9 9B 2F D2 3E C5 2E 00 -- 0841A0
2F D0 36 FF 2E 00 5C ED 99 9A 08 C4 83 00 64 54 -- 0841B0
05 2E D6 06 8B 2E 2E D8 36 FF 2E 2F CE 36 FF 2E -- 0841C0
CB 5E 5F C9 9B 18 C4 83 00 5C 97 5E 9A 50 00 6E -- 0841D0
2E 2F DA 36 FF 2E 2F DC 36 FF 2E EC 8B 55 57 56 -- 0841E0
97 5E 9A 50 00 58 05 2E D6 06 8B 2E 2E D8 36 FF -- 0841F0
DE 36 FF 2E 2F E0 36 FF 2E 08 C4 83 00 5C 01 FE -- 084200
9A 50 00 6E 05 2E D6 06 8B 2E 2E D8 36 FF 2E 2F -- 084210
EC 8B 55 57 56 CB 5E 5F C9 08 C4 83 00 5C 97 5E -- 084220
2E 2E CC 36 FF 2E 1F 74 00 3D 83 2E C6 3E C5 2E -- 084230
04 C4 83 00 64 15 E0 9A 50 00 03 05 2E CA 06 8B -- 084240
C5 2E 00 54 20 BE 9A 00 00 05 C7 2E C6 3E C5 2E -- 084250
FF 2E 2F E4 36 FF 2E 00 6A 00 03 05 C7 2E CE 3E -- 084260
56 CB 5E 5F C9 06 C4 83 00 54 29 BC 9A 2F E2 36 -- 084270
36 FF 2E 00 01 05 C7 2E C6 3E C5 2E EC 8B 55 57 -- 084280
00 64 15 E0 9A 50 00 03 05 2F E6 06 8B 2E 2F E8 -- 084290
02 05 C7 2E CE 3E C5 2E 00 54 20 BE 9A 04 C4 83 -- 0842A0
36 FF 2E 2F EC 36 FF 2E 35 FF 2F EE 3E C5 2E 00 -- 0842B0
57 56 CB 5E 5F C9 06 C4 83 00 54 29 BC 9A 2F EA -- 0842C0
9A 05 75 00 03 3D 05 8B 2E CE 3E C5 2E EC 8B 55 -- 0842D0
3E C5 2E EC 8B 55 57 56 CB 5E 5F C9 00 54 2D E7 -- 0842E0
5F C9 00 54 2E 3B 9A 05 75 00 02 3D 05 8B 2E CE -- 0842F0
86 F6 00 3C 2F A4 00 3C EA EE 00 3C 2F A0 CB 5E -- 084300
E7 00 00 3C EA F0 00 24 F4 B6 00 3C 2F 9E 00 3C -- 084310
40 A6 00 3C E7 42 00 3C E7 2C 00 3C E7 16 00 3C -- 084320
E7 9A 00 3C E7 84 00 3C E7 6E 00 3C E7 58 00 3C -- 084330
33 BE 00 3C E7 DC 00 3C E7 C6 00 3C E7 B0 00 3C -- 084340
E8 04 00 3C 32 C8 00 3C E7 F2 00 3C 2F A8 00 6C -- 084350
E8 5A 00 3C E8 44 00 3C E8 2E 00 3C E8 18 00 3C -- 084360
E8 B2 00 3C E8 9C 00 3C E8 86 00 3C E8 70 00 3C -- 084370
E8 EE 00 3C E8 D8 00 3C EB 74 00 3C E8 C4 00 3C -- 084380
90 A4 00 3C 90 A0 00 24 AF E4 00 3C 2F A2 00 3C -- 084390
E9 1A 00 3C E9 04 00 3C 90 AC 00 3C 90 A8 00 3C -- 0843A0
E9 6E 00 3C E9 58 00 3C E9 44 00 3C E9 2E 00 3C -- 0843B0
E9 AC 00 3C 32 64 00 3C E9 98 00 3C E9 82 00 3C -- 0843C0
E9 E3 00 3C E9 CD 00 3C 31 FE 00 3C E9 C2 00 3C -- 0843D0
EA 39 00 3C EA 23 00 3C EA 0F 00 3C E9 F9 00 3C -- 0843E0
EA 63 00 3C EA 4D 3F E0 00 00 00 00 00 00 00 3C -- 0843F0
00 3C EA A1 00 3C EA 8B 00 3C EA 77 00 3C 01 FE -- 084400
```

584

EP 0 533 348 A2

```
00 6C 28 D8 00 6C 28 DC 00 3C EA AE 00 3C 90 C9 -- 084410
00 3C 2F 20 00 3C 90 36 00 3C EA D8 00 3C EA C2 -- 084420
46 C7 00 00 5A C8 57 56 00 3C 90 C2 00 3C 2F DC -- 084430
24 6A CC 56 89 CA 46 89 5A 16 CE 46 8D FF FF C8 -- 084440
5C ED 6E 9A 0E 76 FF 10 76 FF 12 76 FF 14 76 FF -- 084450
C5 14 45 89 0E 7E C5 05 8B 0A 7E C5 0A C4 83 00 -- 084460
7E C5 0A 76 C4 16 45 89 0E 7E C5 04 45 8B 0A 7E -- 084470
7E C5 10 45 89 0E 7E C5 40 04 2B 26 02 45 8B 0A -- 084480
FF 12 45 89 0E 7E C5 40 04 44 2B 26 06 45 8B 0A -- 084490
7E C5 A6 5E DD 9B 02 C4 83 00 5C ED AF 9A C8 76 -- 0844A0
A6 76 DC 9B 02 C4 83 00 5C ED AF 9A 1A 75 FF 12 -- 0844B0
83 00 5C ED AF 9A 18 75 FF 12 7E C5 AE 5E DD 9B -- 0844C0
ED AF 9A C8 76 FF C0 5E DD 9B AE 46 DC 9B 02 C4 -- 0844D0
9A 1E 75 FF 12 7E C5 A6 5E DD 9B 02 C4 83 00 5C -- 0844E0
C5 AE 5E DD 9B A6 76 DC 9B 02 C4 83 00 5C ED AF -- 0844F0

46 DC 9B 02 C4 83 00 5C ED AF 9A 1C 75 FF 12 7E -- 084500
B8 46 DD 9B AE 5E DD 9B EE D9 9B B8 5E DD 9B AE -- 084510
76 00 5C ED 94 9A AE 5E DC 9B 3E 22 26 DC 2E 9B -- 084520
46 DD 9B 0D EB 3E 22 26 DC 2E 9B B8 46 DD 9B 0C -- 084530
3E 2A 1E DC 2E 9B E0 D9 9B 3E 22 26 DC 2E 9B B8 -- 084540
DD 9B A6 5E DD 9B EE D9 9B 49 73 00 5C ED 94 9A -- 084550
5C ED 94 9A A6 5E DC 9B 3E 22 26 DC 2E 9B C0 46 -- 084560
9B 0D EB 3E 22 26 DC 2E 9B C0 46 DD 9B 0C 76 00 -- 084570
1E DC 2E 9B E0 D9 9B 3E 22 26 DC 2E 9B C0 46 DD -- 084580
05 EB 00 00 B6 46 C7 07 73 00 5C ED 94 9A 3E 2A -- 084590
7E C5 00 C8 E9 03 75 00 B6 7E 83 00 01 B6 46 C7 -- 0845A0
DA 46 89 E0 D1 04 45 8B D8 46 89 E0 D1 05 8B 0A -- 0845B0
50 D8 46 8D 16 CA 76 FF CC 76 FF 50 D6 46 8D 16 -- 0845C0
CA 7E C5 10 C4 83 00 64 40 D0 9A 03 EE 68 06 6A -- 0845D0
45 89 0E 7E C5 00 DA 83 00 01 2D 02 55 8B 05 8B -- 0845E0
0E 7E C5 06 55 8B 04 45 8B CA 7E C5 0A 55 89 08 -- 0845F0
E0 D1 02 45 8B 0A 7E C5 0E 55 89 0C 45 89 01 FE -- 084600
50 D6 46 8D 16 DA 46 89 E0 D1 06 45 8B D8 46 89 -- 084610
03 EE 68 06 6A 50 D8 46 8D 16 CA 76 FF CC 76 FF -- 084620
05 8B CA 7E C5 0E 76 C4 10 C4 83 00 64 40 D0 9A -- 084630
54 1B 26 08 44 2B 26 00 DA 83 00 01 2D 02 55 8B -- 084640
C5 02 55 89 05 89 0E 7E C5 00 D2 83 00 01 05 0A -- 084650
0E 54 1B 26 0C 44 2B 26 06 55 8B 04 45 8B CA 7E -- 084660
8B 99 14 45 8B 12 7E C5 76 EB 00 D2 83 00 01 05 -- 084670
08 44 03 26 99 05 8B 0A 7E C5 12 76 C4 CA 8B D8 -- 084680
55 89 08 45 89 0E 7E C5 D1 1B C3 2B 0A 54 13 26 -- 084690
8B 0A 7E C5 CA 8B D8 8B 99 16 45 8B 12 7E C5 0A -- 0846A0
C5 D1 1B C3 2B 0E 54 13 26 0C 44 03 26 99 04 45 -- 0846B0
75 8B 0A 7E C5 0A 5E C4 0E 55 89 0C 45 89 0E 7E -- 0846C0
02 55 89 05 89 0E 7E C5 99 C6 8B 46 37 2B 26 02 -- 0846D0
7E C5 99 C6 8B 46 04 77 2B 26 06 75 8B 0A 7E C5 -- 0846E0
04 C8 57 56 CB 5E 5F C9 9B 06 55 89 04 45 89 0E -- 0846F0
99 0A 46 8B 18 75 00 3D 83 3E 32 3E C5 2E 00 00 -- 084700
36 3E F7 2E 99 0C 46 8B 0A 46 89 3E 36 3E F7 2E -- 084710
44 03 26 14 45 8B 0E 7E C5 0E 76 C4 0C 46 89 3E -- 084720
FC 46 89 48 12 44 03 26 16 45 8B FE 46 89 48 10 -- 084730
0C 46 8B 0D 7F FE 46 3B 12 7C 14 45 3B 0A 46 8B -- 084740
01 B8 03 EB C0 2B 04 7E FC 46 3B 05 7C 16 45 3B -- 084750
3E 38 3E C5 2E 00 00 08 C8 57 56 CB 5E 5F C9 00 -- 084760
2E FC 46 89 05 8B 3E 3C 3E C5 2E F8 46 89 05 8B -- 084770
3E C5 2E FA 46 89 48 05 03 F8 46 8B 3E 40 3E C5 -- 084780
3E 4E 36 FF 2E FE 46 89 48 05 03 FC 46 8B 3E 44 -- 084790
50 F8 46 8D 16 00 6A 00 6A 00 6A 3E 4C 36 FF 2E -- 0847A0
64 3D BA 9A 01 3C 68 06 6A 35 FF 3E 48 3E C5 2E -- 0847B0
```

585

```
05 8B 02 74 00 3D 83 3E 4C 3E C5 2E 14 C4 83 00 -- 0847C0
7F FF 25 81 0A 7E C5 EC 8B 55 57 56 CB 5E 5F C9 -- 0847D0
2E 7F FF 06 65 81 7F FF 02 65 81 7F FF 04 65 81 -- 0847E0
FF 10 76 FF 12 76 FF 3E 4C 36 FF 2E 3E 4E 36 FF -- 0847F0
6A 35 FF 3E 48 3E C5 2E 57 0C 76 FF 0E 76 01 FE -- 084800
4C 3E C5 2E 14 C4 83 00 64 3D BA 9A 01 3C 68 06 -- 084810
8B 55 57 56 CB 5E 5F C9 05 8B 02 74 00 3D 83 3E -- 084820
3E 56 36 FF 2E 1B 75 00 3D 83 3E 50 3E C5 2E EC -- 084830
3E C5 2E 04 C4 83 00 14 F4 F5 9A 3E 54 36 FF 2E -- 084840
56 CB 5E 5F C9 00 54 34 15 9A 00 01 05 C7 3E 50 -- 084850
C6 4D FE D3 86 C6 43 FE D2 86 C6 00 01 36 C8 57 -- 084860
3D 83 3E 50 3E C5 2E 42 FE D5 86 C6 59 FE D4 86 -- 084870
FE DC 86 89 5A 16 FF 7C 86 8D 02 37 E9 03 75 00 -- 084880
86 89 3E 5A 16 8B 2E 3E 58 06 8B 2E FE DE 96 89 -- 084890

36 FF 2E 3E 5E 36 FF 2E 15 6A FE DA 96 89 FE D8 -- 0848A0
83 00 64 58 BA 9A FE DC B6 FF FE DE B6 FF 3E 5C -- 0848B0
B6 FF 3E 60 36 FF 2E 3E 62 36 FF 2E 08 6A 0A C4 -- 0848C0
86 83 0A C4 83 00 64 58 BA 9A FE DC B6 FF FE DE -- 0848D0
30 7D 04 FE D6 BE 83 00 00 FE D6 86 C7 09 FE DC -- 0848E0
D6 BE 03 1F 16 FD 8B 0F 74 00 3D 80 FE D8 BE C5 -- 0848F0
88 FE DC BE C5 00 20 B8 03 EB 98 FE D2 85 8A FE -- 084900
C9 EB 03 FE DC 86 83 FE D8 86 FF FE D6 86 FF 05 -- 084910
64 36 FF 2E 3E 66 36 FF 2E 35 FF 3E 68 3E C5 2E -- 084920
C5 2E 0A C4 83 00 5C 97 5E 9A 50 92 46 8D 16 3E -- 084930
2E 3E 72 36 FF 2E 19 75 00 06 3D 05 8B 3E 6C 3E -- 084940
C4 83 00 5C 97 5E 9A 50 A8 46 8D 16 3E 70 36 FF -- 084950
2E 3E 76 36 FF 2E 35 FF 3E 78 3E C5 2E 1E EB 08 -- 084960
C4 83 00 5C 97 5E 9A 50 A8 46 8D 16 3E 74 36 FF -- 084970
00 06 3D 05 74 00 05 3D 05 8B 3E 6C 3E C5 2E 0A -- 084980
BE 46 8D 16 3E 7C 36 FF 2E 3E 7E 36 FF 2E 19 75 -- 084990
3E 84 3E C5 2E 20 EB 08 C4 83 00 5C 97 5E 9A 50 -- 0849A0
8D 16 3E 80 36 FF 2E 3E 82 36 FF 2E 50 40 05 8B -- 0849B0
3E 8A 36 FF 2E 0A C4 83 00 5C 97 5E 9A 50 BE 46 -- 0849C0
83 00 5C 97 5E 9A 50 D4 46 8D 16 3E 88 36 FF 2E -- 0849D0
EA 46 8D 16 3E 8C 36 FF 2E 3E 8E 36 FF 2E 08 C4 -- 0849E0
CA 9E DD 9B E8 D9 9B 08 C4 83 00 5C 97 5E 9A 50 -- 0849F0
FE CA 9E DC 9B 05 D9 9B 3E 90 3E C5 2E FE 01 FE -- 084A00
9A 05 D9 9B 3E 98 3E C5 2E 26 72 00 5C ED 94 9A -- 084A10
5C ED 99 9A 05 D9 9B 3E 90 3E C5 2E 00 5C ED 99 -- 084A20
3E C5 2E 24 EB 3E 94 36 FF 2E 3E 96 36 FF 2E 00 -- 084A30
9B 3E 90 3E C5 2E 00 5C ED 99 9A 05 D9 9B 3E 98 -- 084A40
9C 36 FF 2E 3E 9E 36 FF 2E 00 5C ED 99 9A 05 D9 -- 084A50
C5 2E 18 C4 83 00 5C 97 5E 9A 50 EA 46 8D 16 3E -- 084A60
36 FF 2E 3E 56 36 FF 2E 1B 75 00 3D 83 3E 50 3E -- 084A70
C7 3E 50 3E C5 2E 04 C4 83 00 14 F4 F5 9A 3E 54 -- 084A80
FF 7C 86 8D 16 00 6A 50 FE E0 86 8D 16 00 01 05 -- 084A90
0C C4 83 00 14 F5 9B 9A 35 FF 3E 54 3E C5 2E 50 -- 084AA0
9B 02 C4 83 00 14 FA 45 9A 35 FF 3E 54 3E C5 2E -- 084AB0
3D 83 3E 50 3E C5 2E 8B 55 57 56 CB 5E 5F C9 -- 084AC0
4D 9A 35 FF 3E 54 3E C5 2E 00 00 05 C7 13 74 00 -- 084AD0
00 00 10 C8 57 56 CB 5E 5F C9 02 C4 83 00 14 F8 -- 084AE0
83 00 64 F8 46 C7 F6 46 89 05 8B 3E A0 3E C5 2E -- 084AF0
83 3E A4 3E C5 2E 00 14 EE A2 9A 55 75 04 F6 7E -- 084B00
46 C6 00 FF FC 46 C7 FF 01 FE 46 C7 15 75 00 3D -- 084B10
05 8B 3E A4 3E C5 2E 74 EB 00 00 F8 46 C7 76 FA -- 084B20
C6 00 64 FC 46 C7 FF 9C FE 46 C7 10 75 00 01 3D -- 084B30
F7 FC 46 89 05 8B 3E A8 3E C5 2E DD EB 25 FA 46 -- 084B40
12 74 01 F6 7E 83 C8 EB 64 FA 46 C6 FE 46 89 D8 -- 084B50
09 F6 7E 83 06 74 02 F6 7E 83 0C 74 03 F6 7E 83 -- 084B60
```

```
83  06  74  07  F6  7E  83  BC  EB  00  14  EE  A2  9A  07  75  --  084B70
C7  00  00  FE  46  C7  00  14  EE  A2  9A  2F  75  08  F6  7E  --  084B80
F8  76  FF  00  64  F8  46  C7  25  FA  46  C6  00  64  FC  46  --  084B90
14  EC  AE  9A  FE  76  FF  FC  76  FF  50  E4  2A  FA  46  8A  --  084BA0
E9  03  7C  04  F0  7E  83  00  00  F0  46  C7  08  C4  83  00  --  084BB0
83  33  75  00  3D  80  F0  7E  03  3E  58  3E  C5  2E  00  82  --  084BC0
3E  AC  3E  03  2E  02  E7  C1  F0  7E  8B  18  75  00  F6  7E  --  084BD0
F0  7E  8B  37  EB  3E  B0  06  DF  2E  9B  3E  AE  1E  8E  2E  --  084BE0
EE  D9  9B  3E  AE  1E  8E  2E  3E  AC  3E  03  2E  02  E7  C1  --  084BF0
8E  2E  3E  B2  3E  03  2E  E7  D1  F0  7E  8B  22  EB  01  FE  --  084C00
AC  3E  03  2E  02  E7  C1  F0  7E  8B  05  DF  9B  3E  B4  1E  --  084C10
14  9A  00  5C  ED  99  9A  15  D9  9B  3E  AE  1E  8E  2E  3E  --  084C20
F2  45  88  F0  7E  03  1F  16  FD  8B  08  C4  83  00  5C  EE  --  084C30

3E  4C  36  FF  2E  3E  4E  36  FF  2E  FF  75  E9  F0  46  FF  --  084C40
6A  3E  B6  36  FF  2E  3E  B8  36  FF  2E  50  F2  46  8D  16  --  084C50
14  DD  BA  9A  10  C4  83  00  64  40  D0  9A  01  97  68  06  --  084C60
A0  3E  C5  2E  00  00  10  C8  57  56  CB  5E  5F  C9  9B  00  --  084C70
75  04  F6  7E  83  00  64  F8  46  C7  F6  46  89  05  8B  3E  --  084C80
FF  01  FE  46  C7  15  75  00  3D  83  3E  A4  3E  C5  2E  50  --  084C90
68  EB  00  00  F8  46  C7  76  FA  46  C6  00  FF  FC  46  C7  --  084CA0
9C  FE  46  C7  10  75  00  01  3D  05  8B  3E  A4  3E  C5  2E  --  084CB0
A8  3E  C5  2E  DD  EB  25  FA  46  C6  00  64  FC  46  C7  FF  --  084CC0
EB  19  FA  46  C6  FE  46  89  D8  F7  FC  46  89  05  8B  3E  --  084CD0
F6  7E  83  CF  74  03  F6  7E  83  D5  74  01  F6  7E  83  C8  --  084CE0
83  06  74  07  F6  7E  83  C3  74  09  F6  7E  83  C9  74  02  --  084CF0
C6  00  64  FC  46  C7  00  00  FE  46  C7  2A  75  08  F6  7E  --  084D00
E4  2A  FA  46  8A  F8  76  FF  00  64  F8  46  C7  25  FA  46  --  084D10
C7  08  C4  83  00  14  EC  AE  9A  FE  76  FF  FC  76  FF  50  --  084D20
03  3E  58  3E  C5  2E  55  7D  04  F0  7E  83  00  00  F0  46  --  084D30
3E  03  2E  02  E7  C1  F0  7E  8B  15  75  00  3D  80  F0  7E  --  084D40
C1  F0  7E  8B  14  EB  EE  D9  9B  3E  AE  1E  8E  2E  3E  AC  --  084D50
F8  46  DF  9B  3E  AE  1E  8E  2E  3E  AC  3E  03  2E  02  E7  --  084D60
08  C4  83  00  5C  EE  14  9A  00  5C  ED  99  9A  15  D9  9B  --  084D70
2E  A5  EB  F0  46  FF  F2  45  88  F0  7E  03  1F  16  FD  8B  --  084D80
FF  2E  50  F2  46  8D  16  3E  4C  36  FF  2E  3E  4E  36  FF  --  084D90
40  D0  9A  01  97  68  06  6A  3E  B6  36  FF  2E  3E  B8  36  --  084DA0
56  CB  5E  5F  C9  9B  00  14  DD  BA  9A  10  C4  83  00  64  --  084DB0
FF  FF  FF  FE  46  C7  00  02  DC  46  C7  00  00  34  C8  57  --  084DC0
C5  2E  CC  5E  DD  9B  02  C4  83  00  5C  ED  AF  9A  FE  76  --  084DD0
76  DC  9B  02  C4  83  00  5C  ED  AF  9A  35  FF  3E  C2  3E  --  084DE0
5C  ED  AF  9A  35  FF  3E  BE  3E  C5  2E  D4  5E  DD  9B  CC  --  084DF0
9B  3E  BA  3E  C5  2E  D4  46  DC  9B  02  C4  83  00  01  FE  --  084E00
5E  DD  9B  02  C4  83  00  5C  ED  AF  9A  FE  76  FF  1D  D9  --  084E10
02  C4  83  00  5C  ED  AF  9A  35  FF  3E  CE  3E  C5  2E  CC  --  084E20
9A  35  FF  3E  CA  3E  C5  2E  D4  5E  DD  9B  CC  76  DC  9B  --  084E30
3E  C6  3E  C5  2E  D4  46  DC  9B  02  C4  83  00  5C  ED  AF  --  084E40
9B  3E  2A  06  DC  2E  9B  3E  22  06  DD  2E  9B  1D  D9  9B  --  084E50
9A  D4  5E  DC  9B  05  D9  9B  3E  BA  3E  C5  2E  D4  5E  DD  --  084E60
06  DC  2E  9B  3E  22  06  DD  2E  9B  2E  77  00  5C  ED  94  --  084E70
DC  9B  05  D9  9B  3E  C6  3E  C5  2E  CC  5E  DD  9B  3E  2A  --  084E80
05  C7  3E  D2  3E  C5  2E  0B  77  00  5C  ED  94  9A  CC  5E  --  084E90
D9  7E  9A  00  00  05  C7  3E  D2  3E  C5  2E  09  EB  00  01  --  084EA0
16  04  C4  83  00  34  EE  9B  9A  50  EE  46  8D  16  00  34  --  084EB0
34  DA  22  9A  04  C4  83  00  34  ED  BA  9A  50  DE  46  8D  --  084EC0
3E  C5  2E  D4  5E  DD  9B  EE  66  D8  9B  F2  46  D9  9B  00  --  084ED0
D9  9B  3E  98  3E  C5  2E  D4  4E  DC  9B  05  D9  9B  3E  D6  --  084EE0
3E  C5  2E  D4  5E  DD  9B  F6  66  D8  9B  FA  46  D9  9B  1D  --  084EF0
D9  9B  3E  90  3E  C5  2E  D4  4E  DC  9B  05  D9  9B  3E  DA  --  084F00
46  D9  9B  3E  98  36  C4  2E  D4  5E  DD  9B  E8  D9  9B  1D  --  084F10
```

```
3E  C5  2E  34  D8  26  9B  D4  46  DC  9B  DE  66  D8  9B  E2  --  084F20
90  36  C4  2E  D4  5E  DD  9B  E8  D9  9B  1D  D9  9B  3E  98  --  084F30
D8  26  9B  D4  46  DC  9B  E6  66  D8  9B  EA  46  D9  9B  3E  --  084F40
3D  83  3E  32  3E  C5  2E  1D  D9  9B  3E  90  3E  C5  2E  34  --  084F50
05  D9  9B  3E  98  3E  C5  2E  00  01  DC  46  C7  05  74  00  --  084F60
9B  05  D9  9B  3E  90  3E  C5  2E  1D  D9  9B  DC  76  DE  9B  --  084F70
00  06  C8  57  56  CB  5E  5F  C9  9B  1D  D9  9B  DC  76  DE  --  084F80
C1  FA  7E  8B  35  7D  04  FA  7E  83  00  00  FA  46  C7  00  --  084F90
06  DF  2E  9B  3E  AE  1E  8E  2E  3E  AC  3E  03  2E  02  E7  --  084FA0
83  00  5C  EE  14  9A  00  5C  ED  99  9A  15  D9  9B  3E  B0  --  084FB0
EB  FA  46  FF  FC  45  88  FA  7E  03  1F  16  FD  8B  08  C4  --  084FC0
50  FC  46  8D  16  3E  4C  36  FF  2E  3E  4E  36  FF  2E  C5  --  084FD0

9A  01  97  68  06  6A  3E  B6  36  FF  2E  3E  B8  36  FF  2E  --  084FE0
5E  5F  C9  9B  00  14  DD  BA  9A  10  C4  83  00  64  40  D0  --  084FF0
89  14  45  8B  0A  7E  C5  00  00  10  C8  57  56  CB  01  FE  --  085000
89  16  45  8B  FA  46  89  48  FE  46  03  10  45  8B  FE  46  --  085010
8B  0E  7E  C5  F2  46  89  48  F6  46  03  12  45  8B  F6  46  --  085020
8B  F8  46  89  48  FC  46  03  10  45  8B  FC  46  89  14  45  --  085030
8B  F0  46  89  48  F4  46  03  12  45  8B  F4  46  89  16  45  --  085040
8B  10  7E  FE  46  3B  F8  46  8B  18  7D  FA  46  3B  FC  46  --  085050
2B  04  7F  F6  46  3B  F0  46  8B  08  7D  F2  46  3B  F4  46  --  085060
00  00  02  C8  57  56  CB  5E  5F  C9  00  01  B8  03  EB  C0  --  085070
0E  76  C4  1D  7D  12  46  3B  FE  46  8B  00  00  FE  46  C7  --  085080
74  04  3A  26  98  05  8A  0A  46  FF  0A  7E  C5  0E  46  FF  --  085090
5E  5F  C9  00  01  B8  DB  EB  FE  46  FF  08  EB  C0  2B  04  --  0850A0
3E  C5  2E  10  75  00  01  0A  46  F7  EC  8B  55  57  56  CB  --  0850B0
0A  46  F7  00  05  C6  3E  DE  3E  C5  2E  00  05  C6  3E  58  --  0850C0
3E  C5  2E  00  01  45  C6  3E  58  3E  C5  2E  12  75  00  02  --  0850D0
3E  C5  2E  12  75  00  04  0A  46  F7  00  01  45  C6  3E  DE  --  0850E0
F7  00  02  45  C6  3E  DE  3E  C5  2E  00  02  45  C6  3E  58  --  0850F0
2E  00  03  45  C6  3E  58  3E  C5  2E  12  75  00  08  0A  46  --  085100
1A  C8  57  56  CB  5E  5F  C9  00  03  45  C6  3E  DE  3E  C5  --  085110
C7  01  40  E9  03  75  00  3D  83  3E  E2  3E  C5  2E  00  00  --  085120
9B  02  C4  83  00  5C  ED  AF  9A  FE  76  FF  FF  FF  FE  46  --  085130
83  00  5C  ED  AF  9A  35  FF  3E  C2  3E  C5  2E  E6  5E  DD  --  085140
FF  3E  BE  3E  C5  2E  EE  5E  DD  9B  E6  76  DC  9B  02  C4  --  085150
5E  D9  9B  EE  46  DC  9B  02  C4  83  00  5C  ED  AF  9A  35  --  085160
E6  5E  DD  9B  02  C4  83  00  5C  ED  AF  9A  FE  76  FF  FA  --  085170
9B  02  C4  83  00  5C  ED  AF  9A  35  FF  3E  CE  3E  C5  2E  --  085180
AF  9A  35  FF  3E  CA  3E  C5  2E  EE  5E  DD  9B  E6  76  DC  --  085190
C5  2E  F6  5E  D9  9B  EE  46  DC  9B  02  C4  83  00  5C  ED  --  0851A0
04  4D  81  0A  7E  C5  08  75  02  45  0B  05  8B  3E  E6  3E  --  0851B0
7E  C5  07  75  02  45  0B  05  8B  3E  EA  3E  C5  2E  80  00  --  0851C0
89  02  55  8B  05  8B  3E  F2  3E  C5  2E  80  00  0D  81  0A  --  0851D0
8B  3E  E6  3E  C5  2E  3E  EE  36  C4  2E  F4  56  89  F2  46  --  0851E0
ED  C3  9A  50  52  02  54  13  26  04  03  26  02  55  8B  05  --  0851F0
F6  06  DC  2E  9B  F6  46  D8  9B  04  C4  83  00  5C  01  FE  --  085200
81  0A  7E  C5  08  72  00  5C  ED  94  9A  F2  5E  DA  9B  3E  --  085210
46  89  02  55  8B  05  8B  3F  02  3E  C5  2E  80  00  06  4D  --  085220
05  8B  3E  EA  3E  C5  2E  3E  FE  36  C4  2E  F4  56  89  F2  --  085230
5C  ED  C3  9A  50  52  02  54  13  26  04  03  26  02  55  8B  --  085240
DA  9B  3E  F6  06  DC  2E  9B  FA  46  D8  9B  04  C4  83  00  --  085250
00  02  4D  81  0A  7E  C5  08  72  00  5C  ED  94  9A  F2  5E  --  085260
A9  FC  3F  F0  00  00  00  00  00  00  CB  5E  5F  C9  9B  80  --  085270
00  3C  93  DE  00  02  00  3C  B3  28  3F  50  62  4D  D2  F1  --  085280
00  3C  F5  A4  00  3C  93  DC  00  3C  93  DA  00  3C  93  E0  --  085290
00  6C  17  6A  00  6C  25  D0  00  6C  25  CE  00  6C  25  D2  --  0852A0
00  6C  17  66  00  6C  24  FF  00  6C  24  F6  00  6C  24  E0  --  0852B0
00  6C  17  68  00  6C  25  2C  00  6C  25  16  00  3C  A6  BC  --  0852C0
```

588

```
00 6C 25 71 00 6C 17 64 00 6C 25 59 00 6C 25 43 -- 0852D0
00 6C 25 D4 00 6C 25 9D 00 6C 25 D8 00 6C 25 87 -- 0852E0
00 24 F5 0A 00 24 F4 8E 00 6C 17 62 00 6C 25 B1 -- 0852F0
25 C6 00 24 F4 CB 00 6C 17 6E 00 FF 00 24 F4 96 -- 085300
AE E2 00 6C 25 CA 00 3C AE E0 00 3C AE DE 00 6C -- 085310
90 9C 00 3C 90 98 00 3C A6 B6 00 3C AE E4 00 3C -- 085320
AE CE 00 3C AE D2 00 6C 32 C0 00 24 F4 C6 00 3C -- 085330
00 00 00 00 00 00 00 3C A7 36 00 3C AE CA 00 3C -- 085340
00 07 C0 C8 57 56 00 3C A7 3A 00 3C AE C6 3F E0 -- 085350
36 FF 2E 4C FA 36 FF 2E 07 BA 68 00 4C 14 1B 9A -- 085360
0A C4 83 00 5C ED 6E 9A 50 F8 44 86 8D 16 4C F8 -- 085370

D2 8C C5 03 03 DC FE 46 69 FE 46 89 F8 44 86 8B -- 085380
C6 F8 40 BE C5 F8 42 96 89 F8 40 86 89 05 73 2D -- 085390
20 85 C7 1F 16 FD 03 F8 8B 03 DC FE 46 69 00 05 -- 0853A0
0A 6A 04 6A 50 F8 44 86 8D 16 07 BA 68 00 11 FC -- 0853B0
5C A5 FF 9A 4C FC 36 FF 2E 4C FE 36 FF 2E 00 6A -- 0853C0
42 B6 FF 20 74 00 3D 80 F8 40 BE C5 10 C4 83 00 -- 0853D0
64 5B B4 9A 4D 00 36 FF 2E 4D 02 36 FF 2E 57 F8 -- 0853E0
0A 7E C5 07 EB 00 01 05 C7 0A 7E C5 08 C4 83 00 -- 0853F0
00 00 66 C8 57 56 CB 5E 5F C9 00 03 05 C7 01 FE -- 085400
2E 4D 0A 36 FF 2E 4D 0C 36 FF 2E 4D 0E 36 FF 2E -- 085410
04 3E C5 2E 08 C4 83 00 64 07 9A 9A 4D 08 36 FF -- 085420
26 4D 04 36 C4 2E 5C 74 C2 0B 02 55 89 05 89 4D -- 085430
02 75 FF 4D 04 3E C5 2E 20 75 00 60 05 F7 3C C5 -- 085440
00 64 58 22 9A 50 9A 46 8D 16 66 6A 01 6A 35 FF -- 085450
02 75 FF 4D 04 3E C5 2E 14 7D 00 01 3D 0C C4 83 -- 085460
FF 2E 57 56 1A EB 04 C4 83 00 64 0A 64 9A 35 FF -- 085470
9A 66 6A 50 9A 46 8D 16 4D 10 36 FF 2E 4D 12 36 -- 085480
00 00 22 C8 57 56 CB 5E 5F C9 5E 5F 00 5C FE EC -- 085490
74 05 0B 02 45 8B 4D 04 3E C5 2E 00 00 DE 46 C7 -- 0854A0
FF 2E 04 C4 83 00 64 0A 64 9A 35 FF 02 75 FF 45 -- 0854B0
4F A4 9A 50 E0 46 8D 16 4D 14 36 FF 2E 4D 16 36 -- 0854C0
DE 46 8D 16 50 E0 46 8D 16 57 56 08 C4 83 00 64 -- 0854D0
00 05 C7 4D 04 3E C5 2E 5E 5F 00 5C BD B2 9A 50 -- 0854E0
00 00 02 C8 57 56 CB 5E 5F C9 00 00 02 45 C7 00 -- 0854F0
18 3E C5 2E 00 01 05 C7 0A 7E C5 00 00 FE 46 C7 -- 085500
05 0B 02 45 8B 4D 04 3E C5 2E 56 75 00 3D 83 4D -- 085510
25 75 00 60 05 F7 3C C5 26 4D 04 36 C4 2E 33 74 -- 085520
FF 2E 66 6A 01 6A 35 FF 02 75 FF 4D 04 3E C5 2E -- 085530
0C C4 83 00 64 58 22 9A 4D 1C 36 FF 2E 4D 1E 36 -- 085540
54 40 44 9A 00 02 05 C7 0A 7E C5 0E 7D 00 01 3D -- 085550
CB 5E 5F C9 00 01 05 C7 4D 18 3E C5 2E 09 EB 00 -- 085560
B5 9A 00 01 05 C7 4D 20 3E C5 2E EC 8B 55 57 56 -- 085570
36 FF 2E 29 74 00 3D 83 4D 18 3E C5 2E 00 44 53 -- 085580
4D 02 36 FF 2E 50 00 03 05 4D 24 06 8B 2E 4D 26 -- 085590
3E C5 2E 08 C4 83 00 64 5B B4 9A 4D 00 36 FF 2E -- 0855A0
4D 00 36 FF 2E 4D 02 36 FF 2E 00 00 05 C7 4D 18 -- 0855B0
B4 9A 50 00 57 05 4D 10 06 8B 2E 4D 12 36 FF 2E -- 0855C0
C9 00 00 05 C7 4D 28 3E C5 2E 08 C4 83 00 64 5B -- 0855D0
7E C5 00 00 98 46 C7 00 00 68 C8 57 56 CB 5E 5F -- 0855E0
9A 08 75 00 3D 80 4D 00 3E C5 2E 00 01 05 C7 0A -- 0855F0
6A 40 75 00 98 7E 83 98 46 89 00 4C 12 F7 01 FE -- 085600
50 9A 46 8D 16 4D 2C 36 FF 2E 4D 2E 36 FF 2E 66 -- 085610
36 FF 2E 4D 02 36 FF 2E 0A C4 83 00 5C ED 6E 9A -- 085620
16 08 C4 83 00 64 5B B4 9A 50 F1 46 8D 16 4D 00 -- 085630
83 98 46 89 04 C4 83 00 4C 14 43 9A 50 9A 46 8D -- 085640
02 C4 83 00 64 59 DC 9A 98 76 FF 29 74 00 98 7E -- 085650
FF 2E 4D 02 36 FF 2E 57 56 00 02 05 C7 0A 7E C5 -- 085660
5F C9 5E 5F 00 8C 00 02 9A 0F 6A 00 6A 4D 00 36 -- 085670
```

```
46 8D 16 00 00 C8 46 C7 00 00 38 C8 57 56 CB 5E -- 085680
75 FF FF 3D 06 C4 83 00 5C D0 03 9A 0C 6A 50 CC -- 085690
2E 00 F0 E9 02 C4 83 00 64 59 FE 9A 12 60 68 0E -- 0856A0
20 9A 50 CC 46 8D 16 4D 30 36 FF 2E 4D 32 36 FF -- 0856B0
FF 00 54 4C E5 9A 16 75 C0 0B 08 C4 83 00 64 5A -- 0856C0
00 C7 E9 04 C4 83 00 44 80 76 9A 0A 76 FF 0C 76 -- 0856D0
46 DF 9B 04 C4 83 00 5C E0 79 9A 50 D8 46 8D 16 -- 0856E0
9E E9 03 77 00 5C ED 94 9A 4D 34 1E DC 2E 9B D8 -- 0856F0
00 5C ED 94 9A 4D 3C 1E DC 2E 9B D8 46 DF 9B 00 -- 085700
9A 4D 34 1E DC 2E 9B DA 46 DF 9B 00 8A E9 03 72 -- 085710

4D 44 1E DC 2E 9B DA 46 DF 9B 79 76 00 5C ED 94 -- 085720
4C 36 FF 2E 4D 4E 36 FF 2E 68 73 00 5C ED 94 9A -- 085730
C0 0B 08 C4 83 00 64 5A 20 9A 50 CC 46 8D 16 4D -- 085740
46 89 40 E0 D1 4D 50 3E F7 2E 99 D8 46 8B 1B 75 -- 085750
36 FF 2E FF 62 E9 02 C4 83 00 54 4B 16 9A 50 CA -- 085760
64 5A 20 9A 50 CC 46 8D 16 4D 52 36 FF 2E 4D 54 -- 085770
50 3E F7 2E 99 DA 46 8B 17 75 C0 0B 08 C4 83 00 -- 085780
B8 C8 EB 00 54 4C 00 9A 50 CA 46 89 40 E0 D1 4D -- 085790
28 C8 57 56 CB 5E 5F C9 9B 05 89 0A 7E C5 00 03 -- 0857A0
2E 04 C4 83 00 5C E0 79 9A 50 D8 46 8D 16 00 00 -- 0857B0
50 D8 46 8D 16 0D 75 00 0A 3D 05 8B 4D 56 3E C5 -- 0857C0
5A 3E C5 2E E8 46 D9 9B 04 C4 83 00 34 B0 FC 9A -- 0857D0
5E 5F C9 9B 04 5D D9 9B EC 46 D9 9B 1D D9 9B 4D -- 0857E0
74 00 3D 83 4D 5E 3E C5 2E 00 00 02 C8 57 56 CB -- 0857F0
0E 74 00 0C 7E 83 2E EB 00 44 23 6F 9A 07 01 FE -- 085800
8D 16 0C EB 00 34 EF B7 9A 00 6A 50 FE 46 8D 16 -- 085810
0A 7E 83 06 C4 83 00 2C 23 09 9A 00 6A 50 FE 46 -- 085820
5E C8 57 56 CB 5E 5F C9 00 54 79 AB 9A 05 74 00 -- 085830
00 A2 46 C7 00 01 A4 46 C7 00 00 A6 46 C7 00 00 -- 085840
50 DC 46 8D 16 25 75 00 3D 83 4D 62 3E C5 2E 00 -- 085850
EE 9B 9A 50 CC 46 8D 16 04 C4 83 00 34 ED BA 9A -- 085860
00 54 78 D1 9A 05 74 00 A8 7E 83 04 C4 83 00 34 -- 085870
2E 06 C4 83 00 5C D0 03 9A 14 6A 50 EC 46 8D 16 -- 085880
20 9A 50 EC 46 8D 16 4D 66 36 FF 2E 4D 68 36 FF -- 085890
36 FF 2E 01 84 E9 03 74 C0 0B 08 C4 83 00 64 5A -- 0858A0
89 04 C4 83 00 5C 21 A9 9A 4D 5A 36 FF 2E 4D 5C -- 0858B0
00 3D 83 4D 5E 3E C5 2E 2B 74 00 A6 7E 83 A6 46 -- 0858C0
FE 9A A6 76 FF 02 1C E9 03 75 FF A6 7E 83 17 74 -- 0858D0
64 59 DC 9A A6 76 FF 02 0E E9 02 C4 83 00 64 59 -- 0858E0
46 8D 16 1A 75 00 3D 83 4D 5E 3E C5 2E F0 EB 00 -- 0858F0
9A 50 AC 46 8D 16 04 C4 83 00 34 ED BA 9A 50 BC -- 085900
75 00 3D 83 4D 5E 3E C5 2E 04 C4 83 00 34 EE 9B -- 085910
DC 46 8D 16 50 BC 46 8D 16 3D 75 00 A2 7E 83 43 -- 085920
46 8D 16 27 74 C0 0B 08 C4 83 00 4C 0D 79 9A 50 -- 085930
0B 08 C4 83 00 4C 0B F2 9A 50 CC 46 8D 16 50 AC -- 085940
C4 83 00 54 43 99 9A A8 76 FF A4 76 FF 11 74 C0 -- 085950
03 74 00 01 3D 05 8B 4D 56 3E C5 2E 01 93 E9 04 -- 085960
A4 7E 83 23 75 00 3D 83 4D 5E 3E C5 2E 00 8C E9 -- 085970
EB 00 34 EF B7 9A 00 6A 50 A6 46 8D 16 0E 74 00 -- 085980
06 C4 83 00 2C 23 09 9A 00 6A 50 A6 46 8D 16 0C -- 085990
4D 7E 36 FF 2E 4D 80 36 FF 2E 0C 74 00 A2 7E 83 -- 0859A0
AA 46 8D 16 4D 82 36 FF 2E 4D 84 36 FF 2E 0A EB -- 0859B0
3D 83 4D 5E 3E C5 2E 08 C4 83 00 4C 67 6A 9A 50 -- 0859C0
00 6A 50 A6 46 8D 16 0E 74 00 A4 7E 83 23 75 00 -- 0859D0
B7 9A 00 6A 50 A6 46 8D 16 0C EB 00 2C 23 09 9A -- 0859E0
2E FF 54 E9 03 75 02 AA 7E 83 06 C4 83 00 34 EF -- 0859F0
74 00 A8 7E 83 12 74 00 3D 83 4D 5E 3E C5 01 FE -- 085A00
57 C9 9A 05 EB 00 44 00 00 9A 00 54 78 D1 9A 05 -- 085A10
00 54 79 AB 9A 00 CE E9 03 75 00 A8 7E 83 00 44 -- 085A20
```

590

```
46  8D  16  4D  6A  36  FF  2E  4D  6C  36  FF  2E  00  C6  E9  --  085A30
39  9A  08  75  C0  0B  08  C4  83  00  64  5A  20  9A  50  EC  --  085A40
4D  6E  36  FF  2E  4D  70  36  FF  2E  FE  6B  E9  00  5C  23  --  085A50
75  C0  0B  08  C4  83  00  64  5A  20  9A  50  EC  46  8D  16  --  085A60
43  E9  00  01  A2  46  C7  A6  46  89  00  5C  26  92  9A  10  --  085A70
50  EC  46  8D  16  4D  72  36  FF  2E  4D  74  36  FF  2E  FE  --  085A80
5C  22  FF  9A  08  75  C0  0B  08  C4  83  00  64  5A  20  9A  --  085A90
8D  16  4D  76  36  FF  2E  4D  78  36  FF  2E  FE  1D  E9  00  --  085AA0
9A  10  75  C0  0B  08  C4  83  00  64  5A  20  9A  50  EC  46  --  085AB0

6A  FD  F5  E9  00  00  A4  46  C7  A6  46  89  00  5C  22  C5  --  085AC0
50  EC  46  8D  16  4D  7A  36  FF  2E  4D  7C  36  FF  2E  04  --  085AD0
EC  46  8D  16  0D  75  C0  0B  0A  C4  83  00  64  58  6E  9A  --  085AE0
C8  57  56  CB  5E  5F  C9  FD  C5  E9  00  5C  23  D1  9A  50  --  085AF0
13  49  9A  50  FE  46  8D  16  00  44  57  40  9A  00  00  02  --  085B00
16  00  00  02  C8  57  56  CB  5E  5F  C9  04  C4  83  00  64  --  085B10
CB  5E  5F  C9  04  C4  83  00  64  13  07  9A  50  FE  46  8D  --  085B20
86  3E  C5  2E  00  01  05  C7  0A  7E  C5  EC  8B  55  57  56  --  085B30
00  03  3D  05  8B  4D  56  3E  C5  2E  24  75  00  3D  83  4D  --  085B40
74  00  05  3D  0E  74  00  08  3D  13  74  00  07  3D  18  74  --  085B50
C9  00  44  60  DD  9A  05  EB  00  02  05  C7  0A  7E  C5  09  --  085B60
2E  00  01  05  C7  0A  7E  C5  EC  8B  55  57  56  CB  5E  5F  --  085B70
4D  86  3E  C5  2E  25  74  00  03  3D  05  8B  4D  8A  3E  C5  --  085B80
74  00  03  3D  05  8B  4D  56  3E  C5  2E  24  75  00  3D  83  --  085B90
09  74  00  05  3D  0E  74  00  08  3D  13  74  00  07  3D  18  --  085BA0
5F  C9  00  44  63  15  9A  05  EB  00  02  05  C7  0A  7E  C5  --  085BB0
00  01  05  C7  4D  8E  3E  C5  2E  EC  8B  55  57  56  CB  5E  --  085BC0
5F  C9  00  54  A2  55  9A  EC  8B  55  57  56  CB  5E  5F  C9  --  085BD0
92  36  FF  2E  4D  94  36  FF  2E  EC  8B  55  57  56  CB  5E  --  085BE0
55  57  56  CB  5E  5F  C9  04  C4  83  00  64  57  34  9A  4D  --  085BF0
4D  2C  36  FF  2E  4D  2E  36  FF  2E  66  6A  EC  8B  01  FE  --  085C00
4D  96  36  FF  2E  4D  98  36  FF  2E  04  6A  0A  6A  03  6A  --  085C10
8B  55  57  56  CB  5E  5F  C9  10  C4  83  00  5C  A5  FF  9A  --  085C20
6A  03  6A  4D  9E  36  FF  2E  4D  A0  36  FF  2E  66  6A  EC  --  085C30
A5  FF  9A  4D  9A  36  FF  2E  4D  9C  36  FF  2E  04  6A  0A  --  085C40
BA  68  EC  8B  55  57  56  CB  5E  5F  C9  10  C4  83  00  5C  --  085C50
6A  0A  6A  03  6A  4C  F8  36  FF  2E  4C  FA  36  FF  2E  07  --  085C60
00  5C  A5  FF  9A  4D  A2  36  FF  2E  4D  A4  36  FF  2E  04  --  085C70
00  6A  00  6A  EC  8B  55  57  56  CB  5E  5F  C9  10  C4  83  --  085C80
C9  0A  C4  83  00  64  28  52  9A  FF  00  68  00  6A  00  6A  --  085C90
4D  2E  36  FF  2E  66  6A  00  01  D2  C8  57  56  CB  5E  5F  --  085CA0
00  5C  ED  6E  9A  50  FE  32  86  8D  16  4D  2C  36  FF  2E  --  085CB0
00  64  5B  82  9A  50  FE  35  86  8D  16  2F  6A  0A  C4  83  --  085CC0
C6  FE  2E  BE  C5  FE  30  96  89  FE  2E  86  89  06  C4  83  --  085CD0
04  C4  83  00  64  5C  0E  9A  50  FE  35  86  8D  16  00  05  --  085CE0
0A  6A  03  6A  50  FE  32  86  8D  16  66  6A  FE  34  86  88  --  085CF0
5C  A5  FF  9A  4D  A6  36  FF  2E  4D  A8  36  FF  2E  04  6A  --  085D00
6A  00  6A  EC  8B  55  57  56  CB  5E  5F  C9  10  C4  83  00  --  085D10
FF  2E  4D  AC  36  FF  2E  04  6A  0A  6A  03  6A  00  6A  00  --  085D20
56  CB  5E  5F  C9  10  C4  83  00  5C  A5  FF  9A  4D  AA  36  --  085D30
2C  36  FF  2E  4D  2E  36  FF  2E  66  6A  00  01  D2  C8  57  --  085D40
6A  0A  C4  83  00  5C  ED  6E  9A  50  FE  32  86  8D  16  4D  --  085D50
89  06  C4  83  00  64  5B  82  9A  50  FE  35  86  8D  16  2F  --  085D60
8D  16  00  05  C6  FE  2E  BE  C5  FE  30  96  89  FE  2E  86  --  085D70
FE  34  86  88  04  C4  83  00  64  5C  0E  9A  50  FE  35  86  --  085D80
FF  2E  04  6A  0A  6A  03  6A  50  FE  32  86  8D  16  66  6A  --  085D90
10  C4  83  00  5C  A5  FF  9A  4D  AE  36  FF  2E  4D  B0  36  --  085DA0
2E  00  14  F1  29  9A  00  00  02  C8  57  56  CB  5E  5F  C9  --  085DB0
00  54  36  9E  9A  05  75  00  01  3D  05  8B  4D  56  3E  C5  --  085DC0
83  00  54  E7  71  9A  50  FE  46  8D  16  00  54  34  15  9A  --  085DD0
```

```
64 04 5E 9A 00 54 A2 55 9A 00 5C 76 66 9A 04 C4 -- 085DE0
4D 56 3E C5 2E 00 2C CC CD 9A 00 34 7C 7D 9A 00 -- 085DF0
5F C9 00 1C 88 1D 9A 05 75 00 09 3D 05 8B 01 FE -- 085E00
74 00 3D 83 4D 86 3E C5 2E EC 8B 55 57 56 CB 5E -- 085E10
4D B8 36 FF 2E 66 6A 01 05 C6 4D B2 3E C5 2E 5C -- 085E20
05 4D B2 06 8B 2E 4D B4 36 FF 2E 4D B6 36 FF 2E -- 085E30
36 FF 2E 57 56 0A C4 83 00 5C ED 6E 9A 50 00 01 -- 085E40
4D BC 36 FF 2E 50 00 54 05 4D 10 06 8B 2E 4D 12 -- 085E50

B5 9A 5E 5F 00 5C FE EC 9A 12 6A 4D BA 36 FF 2E -- 085E60
5E 5F C9 02 C4 83 00 64 56 DE 9A 00 6A 00 44 53 -- 085E70
C9 00 00 05 C7 4D BE 3E C5 2E EC 8B 55 57 56 CB -- 085E80
8D 16 00 00 F2 46 C7 00 00 0E C8 57 56 CB 5E 5F -- 085E90
FF FF 3D 06 C4 83 00 5C D0 03 9A 0C 6A 50 F4 46 -- 085EA0
00 B2 E9 02 C4 83 00 64 59 FE 9A 12 60 68 0E 75 -- 085EB0
9E 9A 00 54 7A F9 9A 0A 74 C0 0B 00 54 78 67 9A -- 085EC0
36 FF 2E 4D C4 36 FF 2E 00 54 F0 94 9A 00 54 78 -- 085ED0
0B 08 C4 83 00 64 5A 20 9A 50 F4 46 8D 16 4D C2 -- 085EE0
FF 2E 4A EB 00 02 05 C7 4D C6 3E C5 2E 0B 75 C0 -- 085EF0
5A 20 9A 50 F4 46 8D 16 4D CA 36 FF 2E 4D CC 36 -- 085F00
05 C7 4D C6 3E C5 2E 0B 75 C0 0B 08 C4 83 00 64 -- 085F10
8D 16 4D CE 36 FF 2E 4D D0 36 FF 2E 24 EB 00 03 -- 085F20
2E 09 75 C0 0B 08 C4 83 00 64 5A 20 9A 50 F4 46 -- 085F30
3D 05 8B 4D C6 3E C5 2E 00 04 05 C7 4D C6 3E C5 -- 085F40
C5 2E 50 F2 46 8D 16 00 54 C8 1C 9A 1E 74 00 04 -- 085F50
83 00 64 40 D0 9A 01 91 68 03 6A 35 FF 4D C6 3E -- 085F60
06 DD 2E 9B 00 00 08 C8 57 56 CB 5E 5F C9 0A C4 -- 085F70
9B 4D D2 3E C5 2E 15 D9 9B 4D D6 3E C5 2E 4D 34 -- 085F80
1D D9 9B 4D DA 3E C5 2E 4D 44 06 DD 2E 9B 1D D9 -- 085F90
C5 2E 02 C4 83 00 5C ED A7 9A 50 48 48 0A 46 8B -- 085FA0
4D DA 3E C5 2E 4D D6 36 C4 2E 1D D9 9B 4D DE 3E -- 085FB0
4D D2 36 C4 2E F8 5E DD 9B 24 D8 26 9B 05 D9 9B -- 085FC0
F8 76 DC 9B 24 D8 26 9B 05 D9 9B 4D DE 3E C5 2E -- 085FD0
9A 50 00 03 05 0A 46 8B 1D DD 9B 4D E2 3E C5 2E -- 085FE0
9B 1D D9 9B 4D E6 3E C5 2E 02 C4 83 00 5C ED A7 -- 085FF0
9B 1D D9 9B 4D EA 3E C5 2E 4D 34 06 DD 2E 01 FE -- 086000
DD 2E 9B 1D D9 9B 4D EE 3E C5 2E 4D 44 06 DD 2E -- 086010
4D EA 36 C4 2E 1D D9 9B 4D F2 3E C5 2E 4D 3C 06 -- 086020
F8 5E DD 9B 24 D8 26 9B 05 D9 9B 4D EE 3E C5 2E -- 086030
D8 26 9B 05 D9 9B 4D F2 3E C5 2E 4D E6 36 C4 2E -- 086040
5F C9 9B 1D DD 9B 4D F6 3E C5 2E F8 76 DC 9B 24 -- 086050
C5 2E 4D 34 06 DD 2E 9B 00 00 08 C8 57 56 CB 5E -- 086060
2E 9B 1D D9 9B 4D D2 3E C5 2E 15 D9 9B 4D D6 3E -- 086070
48 0A 46 8B 1D D9 9B 4D DE 3E C5 2E 4D 3C 06 DD -- 086080
9B 4D DA 3E C5 2E 02 C4 83 00 5C ED A7 9A 50 48 -- 086090
DD 9B 24 D8 26 9B 05 D9 9B 4D D6 36 C4 2E 1D D9 -- 0860A0
9B 05 D9 9B 4D DE 3E C5 2E 4D D2 36 C4 2E F8 5E -- 0860B0
8B 1D DD 9B 4D E2 3E C5 2E F8 76 DC 9B 24 D8 26 -- 0860C0
C5 2E 02 C4 83 00 5C ED A7 9A 50 00 03 05 0A 46 -- 0860D0
E6 3E C5 2E 4D 34 06 DD 2E 9B 1D D9 9B 4D EA 3E -- 0860E0
9B 4D EE 3E C5 2E 4D 44 06 DD 2E 9B 1D D9 9B 4D -- 0860F0
1D D9 9B 4D F2 3E C5 2E 4D 3C 06 DD 2E 9B 1D D9 -- 086100
D8 26 9B 05 D9 9B 4D EE 3E C5 2E 4D EA 36 C4 2E -- 086110
9B 4D F2 3E C5 2E 4D E6 36 C4 2E F8 5E DD 9B 24 -- 086120
9B 4D F6 3E C5 2E F8 76 DC 9B 24 D8 26 9B 05 D9 -- 086130
FA 3E C5 2E EC 8B 55 57 56 CB 5E 5F C9 9B 1D DD -- 086140
1B 20 00 3C 87 E2 00 CB 5E 5F C9 00 01 05 C7 4D -- 086150
1B 46 00 6C 1B 29 00 6C 1C 00 00 6C 1C 06 00 6C -- 086160
1C 1E 00 6C 1C 04 00 6C 1B 49 00 3C 87 74 00 6C -- 086170
86 A2 00 3C F3 EE 00 6C 1C 72 00 3C AE 58 00 6C -- 086180
```

592

```
00 00 40 3C 00 00 00 00 00 00 00 6C 1B 66 00 3C -- 086190
1B 6B 40 86 F8 00 00 00 00 00 40 8F F8 00 00 00 -- 0861A0
00 6C 1C 16 00 3C 86 9A 00 6C 1B 76 00 02 00 6C -- 0861B0
00 6C 1B 86 00 6C 1B 7F 00 3C 86 92 00 3C AE 54 -- 0861C0
00 6C 1B A9 00 6C 1B A0 00 6C 1B 98 00 6C 1B 90 -- 0861D0
00 3C B3 24 00 3C 90 C2 00 6C 1B B6 00 6C 1B AE -- 0861E0
00 6C 1B C6 00 6C 1B C1 00 6C 1B BE 00 3C 91 14 -- 0861F0

1B DB 00 6C 1B D4 00 6C 1B CB 00 3C 95 0E 01 FE -- 086200
90 D8 00 3C AE 60 00 3C 8F 9C 00 6C 1B E1 00 6C -- 086210
1B F1 00 3C 96 CA 00 6C 1B EA 00 24 77 96 00 3C -- 086220
95 E6 00 3C 95 E2 00 3C 95 DA 00 6C 1B FB 00 6C -- 086230
95 F2 00 3C 95 EA 00 3C 96 BA 00 3C 95 DE 00 3C -- 086240
92 7E 00 3C 96 C2 00 3C 95 EE 00 3C 95 F6 00 3C -- 086250
FC 46 C7 00 00 FE 46 C7 00 00 0C C8 57 56 00 3C -- 086260
45 C6 20 05 C6 5B A0 3E C5 2E 00 F9 46 C6 00 10 -- 086270
00 02 3D 05 8B 5B A4 3E C5 2E 20 02 45 C6 20 01 -- 086280
4F 4E 46 4E 3D 4E 37 A7 FF 2E D8 8B E0 D1 2A 77 -- 086290
C6 5B A0 3E C5 2E 76 03 45 C6 5B A0 3E C5 2E 4E -- 0862A0
A8 3E C5 2E 64 03 45 C6 5B A0 3E C5 2E 25 03 45 -- 0862B0
C5 2E 00 37 05 C7 5B AC 3E C5 2E 00 00 05 C7 5B -- 0862C0
00 31 05 C7 5B B4 3E C5 2E 00 15 05 C7 5B B0 3E -- 0862D0
F6 46 C6 00 F7 46 C6 00 15 05 C7 5B B8 3E C5 2E -- 0862E0
2E 5B BE 36 FF 2E 50 FE 46 8D 16 02 F5 46 C6 02 -- 0862F0
5B AC 3E C5 2E 35 FF 5B B0 3E C5 2E 5B BC 36 FF -- 086300
19 9A 50 E4 2A F5 46 8A 50 E4 2A F7 46 8A 35 FF -- 086310
9A FE 76 FF 0E 74 00 FE 7E 83 10 C4 83 00 54 50 -- 086320
8D 16 03 F5 46 C6 01 3F E9 02 C4 83 00 2C D0 F8 -- 086330
3E C5 2E 5B C0 36 FF 2E 5B C2 36 FF 2E 50 FE 46 -- 086340
E4 2A F6 46 8A 35 FF 5B B4 3E C5 2E 35 FF 5B B8 -- 086350
83 10 C4 83 00 54 50 19 9A 50 E4 2A F5 46 8A 50 -- 086360
2E 5B CA 36 FF 2E 50 FE 46 8D 16 B7 75 00 FE 7E -- 086370
FF 5B BC 3E C5 2E 50 E4 2A F9 46 8A 5B C8 36 FF -- 086380
64 3D BA 9A 02 6A 05 6A 35 FF 5B C4 3E C5 2E 35 -- 086390
83 00 00 FA 46 C7 82 75 00 FE 7E 83 12 C4 83 00 -- 0863A0
50 FE 46 8D 16 44 75 00 FE 7E 83 4A 7D 04 FA 7E -- 0863B0
52 5B CE 16 8B 2E 5B CC 06 03 2E E0 D1 FA 46 8B -- 0863C0
C5 2E 35 FF 5B C0 3E C5 2E 50 E4 2A F9 46 8A 50 -- 0863D0
C4 83 00 64 3D BA 9A 02 6A 05 6A 35 FF 5B C4 3E -- 0863E0
2E B0 EB FA 46 FF FF 32 E9 03 74 00 FE 7E 83 12 -- 0863F0
9A 50 FE 46 8D 16 00 01 05 C7 5B D0 3E C5 01 FE -- 086400
FF 0E E9 03 74 00 FE 7E 83 04 C4 83 00 54 51 40 -- 086410
00 05 C6 5B D8 3E C5 2E 00 05 C6 5B D4 3E C5 2E -- 086420
00 05 C6 5B E0 3E C5 2E 00 05 C6 5B DC 3E C5 2E -- 086430
00 05 C6 5B E8 3E C5 2E 00 05 C6 5B E4 3E C5 2E -- 086440
00 05 C6 5B F0 3E C5 2E 00 05 C6 5B EC 3E C5 2E -- 086450
01 05 C6 5B F8 3E C5 2E 00 05 C6 5B F4 3E C5 2E -- 086460
56 CB 5E 5F C9 C0 2B 00 00 05 C7 5B FC 3E C5 2E -- 086470
F2 46 89 0E 46 8B 00 10 F0 46 C7 00 00 10 C8 57 -- 086480
C6 F6 46 89 0A 46 8B F4 46 89 10 6E F7 0A 46 8B -- 086490
0A 76 FF 09 6A 03 FA 46 C6 01 F9 46 C6 03 F8 46 -- 0864A0
C2 0B FD 56 89 FB 46 89 04 C4 83 00 64 4E A1 9A -- 0864B0
76 FF 51 EB 00 01 B8 03 FC 05 C7 16 7E C5 0C 75 -- 0864C0
0A 76 FF 0C 76 FF 0E 76 FF 10 76 FF FB 76 FF FD -- 0864D0
8D 16 16 76 FF 18 76 FF 0C C4 83 00 54 50 BD 9A -- 0864E0
C4 3E C5 2E F0 76 FF 12 76 FF 14 76 FF 50 F2 46 -- 0864F0
FF 14 C4 83 00 64 3D BA 9A 08 6A 06 6A 35 FF 5B -- 086500
C9 C0 2B 04 C4 83 00 64 4E E3 9A FB 76 FF FD 76 -- 086510
46 8B 00 00 FE 46 C7 00 00 02 C8 57 56 CB 5E 5F -- 086520
5C 00 3E 03 2E F8 03 0C 7E 8B 6A 7D 0A 46 3B FE -- 086530
```

```
03 FA 8B 09 FE 56 6B E4 2A 05 8A 5C 02 1E 8E 2E -- 086540
12 7E 03 F8 8B 09 FE 46 6B 05 88 14 5E 8E 12 7E -- 086550
46 8B 12 7E 03 F8 8B 09 FE 46 6B 00 00 01 45 C7 -- 086560
46 8B 12 7E 03 F8 8B 09 FE 46 6B 03 45 89 48 0E -- 086570
12 7E 03 F8 8B 09 FE 46 6B 05 45 89 10 6E F7 FE -- 086580
8E EB FE 46 FF 07 45 89 48 10 6E F7 40 FE 46 8B -- 086590

43 EA 46 C6 00 00 22 C8 57 56 CB 5E 5F C9 C0 2B -- 0865A0
42 E4 46 C6 42 ED 46 C6 59 EC 46 C6 4D EB 46 C6 -- 0865B0
52 E8 46 C6 4F E7 46 C6 46 E6 46 C6 45 E5 46 C6 -- 0865C0
45 E1 46 C6 54 E0 46 C6 46 DF 46 C6 41 DE 46 C6 -- 0865D0
5B A0 3E C5 2E 05 8B 5C 04 3E C5 2E 52 E2 46 C6 -- 0865E0
01 F7 46 C6 00 03 F1 46 C7 70 EE 46 C6 03 45 88 -- 0865F0
46 C6 01 F5 46 C6 02 F3 46 C6 01 F4 46 C6 01 FE -- 086600
5A 16 E4 46 8D 00 05 EF 46 C7 05 F8 46 C6 04 F6 -- 086610
EE 46 8D 16 0A 76 FF 0C 76 FF FB 56 89 F9 46 89 -- 086620
FF 5B C4 3E C5 2E 35 FF 5B C8 3E C5 2E 17 6A 50 -- 086630
0A 7E C5 12 C4 83 00 64 3D BA 9A 03 6A 05 6A 35 -- 086640
E9 02 C4 83 00 2C D0 F8 9A 35 FF 0D 74 00 3D 83 -- 086650
0C 76 FF FB 56 89 F9 46 89 5A 16 DE 46 8D 01 95 -- 086660
FF 5B C8 3E C5 2E 18 6A 50 EE 46 8D 16 0A 76 FF -- 086670
64 3D BA 9A 03 6A 05 6A 35 FF 5B C4 3E C5 2E 35 -- 086680
00 FE 46 C7 B9 75 00 3D 83 0A 7E C5 12 C4 83 00 -- 086690
46 C6 04 F6 46 C6 01 4B E9 03 7C 04 FE 7E 83 00 -- 0866A0
89 F9 46 89 00 16 2D FE 46 03 5A 16 C5 8B 01 F8 -- 0866B0
46 8D 16 0A 76 FF 0C 76 FF 00 0C EF 46 C7 FB 56 -- 0866C0
8E 2E 5B CC 3E 03 2E E7 D1 FE 7E 8B 19 6A 50 EE -- 0866D0
03 6A 05 6A 35 FF 5B C4 3E C5 2E 35 FF 5B CE 1E -- 0866E0
03 74 00 3D 83 0A 7E C5 12 C4 83 00 64 3D BA 9A -- 0866F0
5B A0 06 8B 2E 04 F8 46 C6 01 F6 46 C6 FF 52 E9 -- 086700
00 05 EF 46 C7 FB 56 89 F9 46 89 5B A2 16 8B 2E -- 086710
E7 D1 FE 7E 8B 1A 6A 50 EE 46 8D 16 57 0C 76 FF -- 086720
C4 3E C5 2E 35 FF 5B CE 1E 8E 2E 5B CC 3E 03 2E -- 086730
C5 12 C4 83 00 64 3D BA 9A 03 6A 05 6A 35 FF 5B -- 086740
8D 16 57 0C 76 FF FE FB E9 03 74 00 3D 83 0A 7E -- 086750
2E 5B CC 3E 03 2E E7 D1 FE 7E 8B 1B 6A 50 EE 46 -- 086760
6A 05 6A 35 FF 5B C4 3E C5 2E 35 FF 5B CE 1E 8E -- 086770
74 00 3D 83 0A 7E C5 12 C4 83 00 64 3D BA 9A 03 -- 086780
C5 2E 07 75 00 3D 83 5B A4 3E C5 2E FE C1 E9 03 -- 086790
FE 7E 8B 05 DF 9B 5C 10 3E C5 2E 05 EB 5C 0C 3E -- 0867A0
1D D9 9B 5C 0A 1E 8E 2E 5C 08 3E 03 2E 02 E7 C1 -- 0867B0
5C 16 16 8B 2E 5C 14 06 03 2E 02 E0 C1 FE 46 8B -- 0867C0
05 D9 9B 5C 08 3E 03 2E 02 E7 C1 FE 7E 8B 50 52 -- 0867D0
FF 0E C4 83 00 14 EA D9 9A 01 6A 00 5C ED 99 9A -- 0867E0
14 C8 57 56 CB 5E 5F C9 9B C0 2B FE AC E9 FE 46 -- 0867F0
FB 46 C6 00 FD 46 C6 00 00 FE 46 C7 00 00 01 FE -- 086800
BC E9 FF FF B8 06 74 00 3D 83 5B FC 3E C5 2E 00 -- 086810
5C 1C 36 C4 2E EC 46 89 05 8B 5C 18 3E C5 2E 01 -- 086820
46 8D 16 EE 46 89 04 03 26 05 8B 5B B0 3E C5 2E -- 086830
FD 46 8A 50 E4 2A FB 46 8A 50 EC 46 8D 16 50 FE -- 086840
FF 5B C4 3E C5 2E 35 FF 5B C8 3E C5 2E 50 E4 2A -- 086850
FE 7E 83 14 C4 83 00 64 3D BA 9A 06 6A 06 6A 35 -- 086860
5C E9 02 C4 83 00 2C D0 F8 9A FE 76 FF 0E 74 00 -- 086870
04 03 26 05 8B 5B AC 3E C5 2E 5C 18 36 C4 2E 01 -- 086880
F8 46 C7 EE 46 89 05 8B 5C 1C 3E C5 2E EC 46 89 -- 086890
8D 16 4F 75 00 FE 7E 83 55 7D 04 F8 7E 83 00 00 -- 0868A0
46 8A 50 E4 2A FB 46 8A 50 EC 46 8D 16 50 FE 46 -- 0868B0
8E 2E 5B CC 3E 03 2E E7 D1 F8 7E 8B 50 E4 2A FD -- 0868C0
06 6A 06 6A 35 FF 5B C4 3E C5 2E 35 FF 5B CE 1E -- 0868D0
C5 2E 85 75 00 FE 7E 83 14 C4 83 00 64 3D BA 9A -- 0868E0
```

594

```
EE  D9  9B  A5  EB  F8  46  FF  EC  46  01  05  8B  5B  B4  3E  --  0868F0
5C  24  3E  C5  2E  EE  D9  9B  1D  D9  9B  5C  20  3E  C5  2E  --  086900
5C  28  3E  C5  2E  05  D9  9B  5C  2C  3E  C5  2E  1D  D9  9B  --  086910
5C  30  3E  C5  2E  05  D9  9B  5C  34  3E  C5  2E  1D  D9  9B  --  086920
5C  3C  3E  C5  2E  0F  05  C6  5C  38  3E  C5  2E  1D  D9  9B  --  086930

16  FF  02  45  C6  00  03  45  C6  00  05  C6  FF  01  45  C6  --  086940
01  4C  68  05  6A  35  FF  02  75  FF  02  6A  50  FE  46  8D  --  086950
02  E9  03  74  00  FE  7E  83  0E  C4  83  00  64  40  D0  9A  --  086960
48  3E  C5  2E  00  02  B8  00  05  C6  5C  40  3E  C5  2E  FF  --  086970
34  D9  7E  9A  05  88  5C  44  3E  C5  2E  E4  2A  05  88  5C  --  086980
00  34  ED  BA  9A  5C  4C  36  FF  2E  5C  4E  36  FF  2E  00  --  086990
16  05  C6  5C  38  3E  C5  2E  00  34  DA  22  9A  04  C4  83  --  0869A0
6A  05  6A  01  6A  57  5C  3A  36  FF  2E  50  FE  46  8D  16  --  0869B0
E9  03  74  00  FE  7E  83  0E  C4  83  00  64  40  D0  9A  6E  --  0869C0
5F  C9  9B  C0  2B  00  01  05  C7  5B  FC  3E  C5  2E  FE  A1  --  0869D0
FD  46  C6  00  00  FE  46  C7  00  00  0A  C8  57  56  CB  5E  --  0869E0
2E  31  74  00  3D  83  5C  50  3E  C5  2E  00  FB  46  C6  00  --  0869F0
5C  58  3E  C5  2E  14  74  00  3D  83  5C  54  3E  C5  01  FE  --  086A00
6A  02  C4  83  00  54  58  57  9A  33  6A  0A  75  00  3D  83  --  086A10
05  C7  5C  58  3E  C5  2E  02  C4  83  00  54  58  57  9A  32  --  086A20
04  F8  7E  83  00  00  F8  46  C7  00  00  F6  46  C7  00  00  --  086A30
2E  5C  60  36  03  2E  E6  D1  F8  76  8B  00  F5  E9  03  7C  --  086A40
03  75  04  23  26  05  8B  5C  5C  3E  C5  2E  5C  62  06  8E  --  086A50
8B  2E  5C  08  06  03  2E  02  E0  C1  F8  46  8B  00  D1  E9  --  086A60
5C  14  3E  03  2E  02  E7  C1  F6  7E  8B  50  52  5C  0A  16  --  086A70
9A  00  6A  00  5C  ED  99  9A  05  D9  9B  5C  16  1E  8E  2E  --  086A80
A0  36  FF  2E  5B  A2  36  FF  2E  0E  C4  83  00  14  EA  D9  --  086A90
0A  1E  8E  2E  5C  08  3E  03  2E  02  E7  C1  F8  7E  8B  5B  --  086AA0
C4  83  00  5C  ED  F9  9A  00  5C  ED  99  9A  05  D9  9B  5C  --  086AB0
2E  5B  A0  06  8B  2E  06  C4  83  00  54  57  C1  9A  50  08  --  086AC0
8D  16  02  55  89  05  89  5C  64  3E  C5  2E  5B  A2  16  8B  --  086AD0
36  FF  2E  5C  68  36  FF  2E  5C  6A  36  FF  2E  50  FE  46  --  086AE0
2E  E7  D1  F8  7E  8B  0A  76  FF  5B  D4  36  FF  2E  5B  D6  --  086AF0
5B  C4  3E  C5  2E  35  FF  5B  CE  1E  8E  2E  5B  CC  3E  03  --  086B00
7E  83  16  C4  83  00  64  3D  BA  9A  04  6A  07  6A  35  FF  --  086B10
EB  02  C4  83  00  2C  D0  F8  9A  FE  76  FF  0D  74  00  FE  --  086B20
5E  5F  C9  9B  C0  2B  FF  02  E9  F8  46  FF  F6  46  FF  0B  --  086B30
FC  3E  C5  2E  00  00  FE  46  C7  00  00  04  C8  57  56  CB  --  086B40
54  3E  C5  2E  00  CD  E9  00  01  B8  06  75  00  3D  83  5B  --  086B50
02  C4  83  00  54  58  57  9A  33  6A  0A  74  00  3D  83  5C  --  086B60
C5  2E  50  FE  46  8D  16  00  00  05  C7  5C  54  3E  C5  2E  --  086B70
07  6A  02  6A  35  FF  5B  C4  3E  C5  2E  35  FF  5B  C8  3E  --  086B80
76  FF  0D  74  00  FE  7E  83  0C  C4  83  00  64  3D  BA  9A  --  086B90
00  00  FC  46  C7  7E  EB  02  C4  83  00  2C  D0  F8  9A  FE  --  086BA0
FE  46  8D  16  34  75  00  FE  7E  83  3A  7D  04  FC  7E  83  --  086BB0
5B  CE  1E  8E  2E  5B  CC  3E  03  2E  E7  D1  FC  7E  8B  50  --  086BC0
3D  BA  9A  07  6A  02  6A  35  FF  5B  C4  3E  C5  2E  35  FF  --  086BD0
C0  EB  FC  46  FF  B3  75  00  FE  7E  83  0C  C4  83  00  64  --  086BE0
36  FF  2E  50  FE  46  8D  16  16  05  C6  5C  38  3E  C5  2E  --  086BF0
00  64  40  D0  9A  6E  6A  05  6A  01  6A  57  5C  3A  01  FE  --  086C00
5B  FC  3E  C5  2E  C0  2B  87  75  00  FE  7E  83  0E  C4  83  --  086C10
56  CB  5E  5F  C9  C0  2B  05  89  5B  A8  3E  C5  2E  05  89  --  086C20
83  00  00  FE  46  C7  00  00  F8  46  C7  00  00  08  C8  57  --  086C30
05  C6  0E  5E  8E  0C  7E  03  FE  7E  8B  11  7D  03  FE  7E  --  086C40
0C  7E  C5  05  8B  5C  04  3E  C5  2E  E9  EB  FE  46  FF  20  --  086C50
FE  7E  83  00  64  FC  46  C7  00  00  FE  46  C7  03  45  88  --  086C60
FA  7E  83  FA  46  89  FC  7E  F7  99  0A  46  8B  4C  7D  03  --  086C70
C7  1F  75  02  FE  7E  83  06  74  01  F8  7E  83  0C  7F  00  --  086C80
FE  7E  8B  0A  46  29  FA  6E  F7  FC  46  8B  00  01  F8  46  --  086C90
```

595

```
2A 88 00 6C 2A 87 00 6C 2A 86 00 6C 2A 85 00 6C -- 087050
29 F4 00 6C 2A 8B 00 6C 2A 8A 00 6C 2A 89 00 6C -- 087060
F4 94 00 6C 2A 20 00 24 F4 90 00 6C 2A 0A 00 6C -- 087070

29 FC 00 6C 29 FA 00 6C 2A 10 00 24 F4 92 00 24 -- 087080
90 7A 00 6C 2A 44 00 6C 2A 48 00 6C 2A 40 00 6C -- 087090
2A 52 00 6C 2A 50 00 3C 90 7E 00 6C 2A 4C 00 3C -- 0870A0
2A 56 00 6C 2A 68 00 6C 2A 67 00 6C 2A 66 00 6C -- 0870B0
1E 38 00 6C 1D E4 00 6C 1E 2A 00 6C 1E 28 00 6C -- 0870C0
00 0A 00 6C 2A 8C 00 6C 2A 97 00 6C 29 FE 00 6C -- 0870D0
00 6C 1E 2C 00 6C 2A 30 00 3C 86 9E 00 3C 86 9C -- 0870E0
00 6C 1E 30 00 6C 2A 38 40 08 00 00 00 00 00 00 -- 0870F0
00 6C 2A 5A 00 6C 2A 5E 00 6C 2A 3C 00 6C 2A 34 -- 087100
C7 00 01 F2 46 C7 00 00 2C C8 57 56 00 6C 2A 62 -- 087110
00 00 D4 46 C7 00 00 05 C7 1A 7E C5 00 08 F0 46 -- 087120
7E 3E C5 2E 0F 7D 01 00 D4 7E 81 D4 46 FF 03 EB -- 087130
46 0B 18 46 8B E7 EB 05 88 D4 46 8B D4 7E 03 6A -- 087140
D4 7E 81 D4 46 FF 03 EB 00 00 D4 46 C7 3A 74 16 -- 087150
83 18 5E 8E 16 7E 03 E7 D1 D4 7E 8B 29 7D 01 00 -- 087160
8B 18 5E 8E 16 7E 03 E7 D1 D4 7E 8B E6 74 00 3D -- 087170
1C 76 FF CD EB 05 88 D4 7E 03 6A 7E 3E C5 2E 05 -- 087180
9A 01 6A 6A 82 36 FF 2E 6A 84 36 FF 2E 1A 76 FF -- 087190
E9 03 74 00 3D 83 1A 7E C5 0A C4 83 00 5C E5 CA -- 0871A0
46 C6 00 F9 46 C6 01 FA 46 C6 00 FB 46 C6 0C 2E -- 0871B0
2C 45 C7 3D C5 6A 82 3E C5 2E 00 F6 46 C6 00 F7 -- 0871C0
2E 40 04 2B 26 02 45 8B 12 7E C5 12 76 C4 00 00 -- 0871D0
3D C5 6A 82 3E C5 2E 16 45 89 3D C5 6A 82 3E C5 -- 0871E0
2E 00 01 28 45 C7 3D C5 6A 82 3E C5 2E 2A 45 89 -- 0871F0
3E C5 2E 00 01 2E 45 C7 3D C5 6A 82 3E C5 01 FE -- 087200
3D C5 6A 82 3E C5 2E 00 00 32 45 C7 3D C5 6A 82 -- 087210
2E 3A 45 89 3D C5 6A 82 3E C5 2E 3C 45 89 C0 2B -- 087220
3D C5 6A 82 3E C5 2E 38 45 89 3D C5 6A 82 3E C5 -- 087230
C5 6A 82 3E C5 2E 05 8B 6A 86 3E C5 2E 36 45 89 -- 087240
75 00 3D 83 6A 86 3E C5 2E 02 F4 46 C6 05 89 3D -- 087250
2E 0C EB 00 40 4C 45 C7 3D C5 6A 82 3E C5 2E 0E -- 087260
74 13 0C 7E 83 00 0F 4C 45 C7 3D C5 6A 82 3E C5 -- 087270
F9 46 C6 0B 75 14 0C 7E 83 06 74 15 0C 7E 83 0C -- 087280
0A 46 8B 00 03 EE 46 C7 05 EB 00 01 EE 46 C7 01 -- 087290
05 EE 46 8B F5 46 88 00 0C 05 EE 46 8B 07 78 E9 -- 0872A0
88 E4 2A F6 46 88 E4 2A F5 46 8A F8 46 88 00 0C -- 0872B0
C5 2E 00 0C 4E 45 C7 3D C5 6A 82 3E C5 2E F7 46 -- 0872C0
6A 82 3E C5 2E 08 45 89 00 03 B8 3D C5 6A 82 3E -- 0872D0
8A 06 8B 2E 3D C5 6A 82 3E C5 2E 0A 45 89 3D C5 -- 0872E0
03 F4 46 C6 48 55 89 46 45 89 6A 8C 16 8B 2E 6A -- 0872F0
C5 6A 82 3E C5 2E 26 75 00 3D 83 6A 86 3E C5 2E -- 087300
36 FF 2E 6A 8C 36 FF 2E 57 56 01 01 4C 45 C7 3D -- 087310
18 EB 5E 5F 00 8C 00 02 9A 01 00 68 50 6A 6A 8A -- 087320
00 68 00 6A 6A 8A 36 FF 2E 6A 8C 36 FF 2E 57 56 -- 087330
83 04 EB 00 00 D4 46 C7 5E 5F 00 8C 00 02 9A 01 -- 087340
8B 57 56 06 F6 E9 03 7C 01 00 D4 7E 81 10 D4 46 -- 087350
52 6A 8C 16 8B 2E 6A 8A 06 03 2E D4 46 03 F0 46 -- 087360
46 8B D1 EB 5E 5F 00 8C 00 02 9A 08 6A 40 6A 50 -- 087370
F8 46 88 00 0C 05 EE 46 8B F5 46 88 00 0C 05 EE -- 087380
C6 06 B4 E9 00 08 4E 45 C7 3D C5 6A 82 3E C5 2E -- 087390
05 EE 46 8B F5 46 88 00 08 05 EE 46 8B 00 F9 46 -- 0873A0
09 4E 45 C7 3D C5 6A 82 3E C5 2E F8 46 88 00 0C -- 0873B0
76 C4 01 FB 46 C6 04 75 00 10 7D 83 12 7E C5 00 -- 0873C0
82 3E C5 2E 40 26 44 2B 26 2A 45 8B 12 7E C5 12 -- 0873D0
82 3E C5 2E 10 45 8B 12 7E C5 16 45 89 3D C5 6A -- 0873E0
82 3E C5 2E 14 45 8B 12 7E C5 28 45 89 3D C5 6A -- 0873F0
```

```
2E 40 14 45 8B 12 7E C5 2E 45 89 3D C5 6A 01 FE -- 087400
3D C5 6A 82 3E C5 2E 30 45 89 3D C5 6A 82 3E C5 -- 087410
C5 32 45 89 3D C5 6A 82 3E C5 2E 34 45 89 C0 2B -- 087420
C5 38 45 89 3D C5 6A 82 3E C5 2E 12 45 8B 12 7E -- 087430
C5 36 45 89 3D C5 6A 82 3E C5 2E 1E 45 8B 12 7E -- 087440
C5 3C 45 89 3D C5 6A 82 3E C5 2E 16 45 8B 12 7E -- 087450
83 3A 45 89 3D C5 6A 82 3E C5 2E 18 45 8B 12 7E -- 087460
00 3D 83 6A 86 3E C5 2E 05 DD E9 03 75 11 0A 7E -- 087470
46 8A 01 01 4C 45 C7 3D C5 6A 82 3E C5 2E 0C 75 -- 087480
6A 82 3E C5 2E F7 46 88 E4 2A F6 46 88 E4 2A F8 -- 087490
3E C5 2E 32 45 8B 12 7E C5 00 0C 4E 45 C7 3D C5 -- 0874A0
45 89 3D C5 6A 82 3E C5 2E 08 45 89 3D C5 6A 82 -- 0874B0
C5 6A 82 3E C5 2E 30 55 8B 2E 45 8B 12 7E C5 0A -- 0874C0
46 C6 05 77 E9 03 F4 46 C6 48 55 89 46 45 89 3D -- 0874D0
13 3D 24 45 8B 12 7E C5 2C 75 01 EE 7E 83 00 F9 -- 0874E0
7E C5 0B 74 00 15 3D 24 45 8B 12 7E C5 16 74 00 -- 0874F0
88 00 0C 05 EE 46 8B 0B 75 00 14 3D 24 45 8B 12 -- 087500
46 88 00 08 05 EE 46 8B 0F F8 46 C6 04 EB F8 46 -- 087510
05 25 E9 00 06 4E 45 C7 3D C5 6A 82 3E C5 2E F5 -- 087520
3E C5 2E 07 F8 46 C6 F5 46 88 00 08 05 EE 46 8B -- 087530
03 F5 46 C6 05 09 E9 00 04 4E 45 C7 3D C5 6A 82 -- 087540
3D C5 6A 82 3E C5 2E F8 46 88 00 0C 05 EE 46 8B -- 087550
05 EE 46 8B 03 F5 46 C6 04 ED E9 00 02 4E 45 C7 -- 087560
0D 4E 45 C7 3D C5 6A 82 3E C5 2E F8 46 88 00 0C -- 087570
46 88 00 0C 05 EE 46 8B 03 F5 46 C6 04 D1 E9 00 -- 087580
45 C7 3D C5 6A 82 3E C5 2E 0E 75 08 0A 7E 83 F8 -- 087590
0E 4E 45 C7 3D C5 6A 82 3E C5 2E 0C EB 00 00 4E -- 0875A0
45 89 3D C5 6A 82 3E C5 2E 10 45 8B 12 7E C5 00 -- 0875B0
C2 0B EC 56 89 EA 46 89 99 10 45 8B 12 7E C5 28 -- 0875C0
56 8B EA 46 8B 00 10 B9 15 EB 01 FB 46 C6 06 75 -- 0875D0
12 7E C5 EC 56 89 EA 46 89 FA E2 D2 D1 E0 D1 EC -- 0875E0
45 8B 12 7E C5 EC 56 11 EA 46 01 D2 2B 12 45 8B -- 0875F0
12 7E C5 38 45 89 3D C5 6A 82 3E C5 2E 12 01 FE -- 087600
12 7E C5 3C 45 89 3D C5 6A 82 3E C5 2E 16 45 8B -- 087610
12 7E C5 3A 45 89 3D C5 6A 82 3E C5 2E 18 45 8B -- 087620
89 FA E2 D2 D1 E0 D1 00 10 B9 0E 55 8B 0C 45 8B -- 087630
DA 76 FF DC 76 FF 50 EA 46 8D 16 DC 56 89 DA 46 -- 087640
7E C5 E8 56 89 E6 46 89 08 C4 83 00 5C EF 74 9A -- 087650
00 DA 83 00 01 2D E8 56 13 E6 46 03 99 05 8B 12 -- 087660
C5 00 9A E9 03 74 01 FB 7E 80 02 45 89 12 7E C5 -- 087670
8B 00 10 B9 EC 56 89 EA 46 89 99 14 45 8B 12 7E -- 087680
56 89 EA 46 89 FA E2 D2 D1 E0 D1 EC 56 8B EA 46 -- 087690
C5 EC 56 11 EA 46 01 D2 2B 16 45 8B 12 7E C5 EC -- 0876A0
E2 D2 D1 E0 D1 00 10 B9 0A 55 8B 08 45 8B 12 7E -- 0876B0
29 D2 2B 18 45 8B 12 7E C5 E0 56 89 DE 46 89 FA -- 0876C0
DE 76 FF E0 76 FF 50 EA 46 8D 16 E0 56 19 DE 46 -- 0876D0
8D 16 E4 56 89 E2 46 89 08 C4 83 00 5C EF 74 9A -- 0876E0
C4 83 00 5C EE E2 9A E2 76 FF E4 76 FF 50 EA 46 -- 0876F0
46 83 00 BD E9 03 75 DE 46 3B 08 75 E0 56 3B 08 -- 087700
8B 08 45 8B 12 7E C5 00 B2 E9 00 E4 56 83 01 E2 -- 087710
46 89 1A 45 8B 12 7E C5 E0 56 89 DE 46 89 0A 55 -- 087720
46 89 16 44 03 26 18 45 8B 12 7E C5 12 76 C4 D6 -- 087730
D1 E0 D1 00 01 B9 0E 55 8B 0C 45 8B 12 7E C5 D8 -- 087740
DC 9A 50 52 99 C7 8B 4F D6 7E 8B 50 52 FA E2 D2 -- 087750
00 00 E2 46 C7 0E 46 01 E0 D1 08 C4 83 00 5C EE -- 087760
38 7F 07 7C E0 56 3B 99 D6 46 8B 00 00 E4 46 C7 -- 087770
0C 73 16 45 3B D8 46 8B 12 7E C5 33 77 DE 46 3B -- 087780
8B 12 7E C5 09 EB D6 46 01 40 14 45 8B 12 7E C5 -- 087790
46 83 D8 46 01 16 45 8B 12 7E C5 D6 46 01 14 45 -- 0877A0
```

597

```
1B DE 46 2B 99 D6 46 8B BD EB 00 E4 56 83 01 E2 -- 0877B0
45 8B 12 7E C5 1C 55 89 1A 45 89 12 7E C5 E0 56 -- 0877C0
7E C5 00 DA 83 00 01 2D E4 56 13 E2 46 03 99 04 -- 0877D0
2B 16 45 8B 12 7E C5 50 E2 46 8D 16 06 45 89 12 -- 0877E0
45 01 12 7E C5 08 C4 83 00 5C EE E8 9A 50 52 D2 -- 0877F0
12 7E C5 50 00 0C 05 12 46 8B 14 76 FF 18 01 FE -- 087800
C5 2E 08 C4 83 00 5C EE E2 9A 50 52 99 14 45 8B -- 087810
0C 05 12 46 8B 14 76 FF 2A 45 89 3D C5 6A 82 3E -- 087820
E2 9A 50 52 99 C6 8B 46 14 75 8B 12 7E C5 50 00 -- 087830
2C 45 89 3D C5 6A 82 3E C5 2E 08 C4 83 00 5C EE -- 087840
3E C5 2E 40 04 2B 26 02 45 8B 12 7E C5 12 76 C4 -- 087850
00 08 05 EE 46 8B 01 EF E9 16 45 89 3D C5 6A 82 -- 087860
45 C7 3D C5 6A 82 3E C5 2E 06 F8 46 C6 F5 46 88 -- 087870
EE 46 8B 02 F5 46 C6 19 75 09 0A 7E 83 00 04 4E -- 087880
4E 45 C7 3D C5 6A 82 3E C5 2E F8 46 88 00 0C 05 -- 087890
89 3D C5 6A 82 3E C5 2E 10 45 8B 12 7E C5 00 00 -- 0878A0
0B EC 56 89 EA 46 89 99 10 45 8B 12 7E C5 28 45 -- 0878B0
12 7E C5 00 FB 46 C6 04 EB 01 FB 46 C6 06 75 C2 -- 0878C0
12 7E C5 38 45 89 3D C5 6A 82 3E C5 2E 12 45 8B -- 0878D0
12 7E C5 3C 45 89 3D C5 6A 82 3E C5 2E 16 45 8B -- 0878E0
12 7E C5 3A 45 89 3D C5 6A 82 3E C5 2E 18 45 8B -- 0878F0
14 76 FF 36 45 89 3D C5 6A 82 3E C5 2E 1E 45 8B -- 087900
50 52 99 14 45 8B 12 7E C5 50 00 0C 05 12 46 8B -- 087910
89 3D C5 6A 82 3E C5 2E 08 C4 83 00 5C EE E2 9A -- 087920
8B 12 7E C5 50 00 0C 05 12 46 8B 14 76 FF 2A 45 -- 087930
08 C4 83 00 5C EE E2 9A 50 52 99 C6 8B 46 14 75 -- 087940
12 7E C5 12 76 C4 2C 45 89 3D C5 6A 82 3E C5 2E -- 087950
45 89 3D C5 6A 82 3E C5 2E 40 04 2B 26 02 45 8B -- 087960
F8 46 C6 F5 46 88 00 08 05 EE 46 8B 00 E5 E9 16 -- 087970
F9 46 C6 00 04 4E 45 C7 3D C5 6A 82 3E C5 2E 06 -- 087980
46 88 00 0C 05 EE 46 8B 02 F5 46 C6 00 C5 E9 00 -- 087990
F9 46 C6 00 02 4E 45 C7 3D C5 6A 82 3E C5 2E F8 -- 0879A0
46 88 00 0C 05 EE 46 8B 03 F5 46 C6 00 A5 E9 00 -- 0879B0
00 89 E9 00 00 4E 45 C7 3D C5 6A 82 3E C5 2E F8 -- 0879C0
3E C5 2E F8 46 88 00 0C 05 EE 46 8B 03 F5 46 C6 -- 0879D0
7E C5 12 76 C4 02 6A 00 00 4E 45 C7 3D C5 6A 82 -- 0879E0
00 64 4E A1 9A 50 E0 D1 40 04 2B 26 02 45 8B 12 -- 0879F0
C5 4C 75 C2 0B 10 56 89 0E 46 89 04 C4 83 01 FE -- 087A00
10 87 05 C7 1A 7E C5 03 D1 E9 D3 03 05 C7 1A 7E -- 087A10
B5 A7 FF 2E D8 8B E0 D1 F1 77 00 14 3D 03 C7 E9 -- 087A20
3A 5E 2F 65 56 60 D6 60 BA 60 68 60 68 5F 0A 65 -- 087A30
1A 64 FA 65 1A 65 9D 65 9D 63 F0 64 09 61 0E 65 -- 087A40
00 00 FC 46 C7 61 0E 60 F2 5F 2B 5F 2B 64 FA 65 -- 087A50
56 0B FC 46 0B 99 E4 2A FB 46 8A 00 00 FE 46 C7 -- 087A60
FE 56 89 FC 46 89 FA E2 D2 D1 E0 D1 00 01 B9 FE -- 087A70
D1 00 01 B9 FE 56 0B FC 46 0B 99 E4 2A FA 46 8A -- 087A80
E4 2A F9 46 8A FE 56 89 FC 46 89 FA E2 D2 D1 E0 -- 087A90
FA E2 D2 D1 E0 D1 00 05 B9 FE 56 0B FC 46 0B 99 -- 087AA0
0B FC 46 0B 99 E4 2A F8 46 8A FE 56 89 FC 46 89 -- 087AB0
56 89 FC 46 89 FA E2 D2 D1 E0 D1 00 05 B9 FE 56 -- 087AC0
00 05 B9 FE 56 0B FC 46 0B 99 E4 2A F7 46 8A FE -- 087AD0
2A F6 46 8A FE 56 89 FC 46 89 FA E2 D2 D1 E0 D1 -- 087AE0
E2 D2 D1 E0 D1 00 05 B9 FE 56 0B FC 46 0B 99 E4 -- 087AF0
FC 46 0B 99 E4 2A F5 46 8A FE 56 89 FC 46 89 FA -- 087B00
89 FC 46 89 FA E2 D2 D1 E0 D1 00 02 B9 FE 56 0B -- 087B10
C5 2E FE 56 09 FC 46 09 99 E4 2A F4 46 8A FE 56 -- 087B20
55 89 02 45 89 FE 56 8B FC 46 8B 3D C5 6A 82 3E -- 087B30
C5 2E 06 45 89 0C 46 8B 3D C5 6A 82 3E C5 2E 04 -- 087B40
6A 82 3E C5 2E 0C 45 89 0C 46 8B 3D C5 6A 82 3E -- 087B50
```

```
7E C5 10 55 89 0E 45 89 10 56 8B 0E 46 8B 3D C5 -- 087B60
3E C5 2E 12 45 89 3D C5 6A 82 3E C5 2E 05 8B 12 -- 087B70
45 89 3D C5 6A 82 3E C5 2E 16 45 8B 3D C5 6A 82 -- 087B80
3E C5 2E 00 00 1A 45 C7 3D C5 6A 82 3E C5 2E 18 -- 087B90
8B 12 7E C5 12 76 C4 00 01 1C 45 C7 3D C5 6A 82 -- 087BA0
45 89 3D C5 6A 82 3E C5 2E 40 04 44 2B 26 06 45 -- 087BB0
45 89 10 56 8B 0E 46 8B 3D C5 6A 82 3E C5 2E 1E -- 087BC0
3D C5 6A 82 3E C5 2E 05 8B 12 7E C5 22 55 89 20 -- 087BD0
2E 6A 7E 06 8B 2E 3D C5 6A 82 3E C5 2E 24 45 89 -- 087BE0
C5 6A 82 3E C5 2E 40 55 89 3E 45 89 6A 80 16 8B -- 087BF0
7E 83 0C 74 10 0A 7E 83 00 00 4A 45 C7 3D 01 FE -- 087C00
12 7E C5 12 76 C4 22 75 02 0A 7E 83 06 74 0F 0A -- 087C10
89 3D C5 6A 82 3E C5 2E 40 20 44 2B 26 22 45 8B -- 087C20
E9 0A 46 8B 2A 45 89 3D C5 6A 82 3E C5 2E 18 45 -- 087C30
89 3D C5 6A 82 3E C5 2E 04 45 8B 12 7E C5 00 9E -- 087C40
89 3D C5 6A 82 3E C5 2E 04 45 8B 12 7E C5 14 45 -- 087C50
6A 82 3E C5 2E 04 45 8B 12 7E C5 00 AF E9 26 45 -- 087C60
C7 3D C5 6A 82 3E C5 2E 00 9C E9 26 45 89 3D C5 -- 087C70
C5 6A 82 3E C5 2E 04 45 8B 12 7E C5 00 00 2A 45 -- 087C80
C5 6A 82 3E C5 2E 04 45 8B 12 7E C5 14 45 89 3D -- 087C90
06 74 15 0C 7E 83 0C 74 13 0C 7E 83 26 45 89 3D -- 087CA0
2A 65 D1 3D C5 6A 82 3E C5 2E 5E 75 14 0C 7E 83 -- 087CB0
83 6A 86 3E C5 2E 2C 65 D1 3D C5 6A 82 3E C5 2E -- 087CC0
34 EB 18 65 D1 3D C5 6A 82 3E C5 2E 40 74 00 3D -- 087CD0
67 E7 68 70 A7 FF 2E D8 8B E0 D1 2F 77 00 12 3D -- 087CE0
68 06 67 FA 67 E7 67 FA 68 06 68 06 67 E7 67 E7 -- 087CF0
67 C4 67 C4 67 C4 67 C4 68 96 68 96 68 06 68 06 -- 087D00
2E 04 45 8B 12 7E C5 5C EB 0A 46 8B 67 E7 67 E7 -- 087D10
7E C5 12 76 C4 7E EB 14 45 89 3D C5 6A 82 3E C5 -- 087D20
3D C5 6A 82 3E C5 2E 40 28 44 2B 26 2C 45 8B 12 -- 087D30
3D C5 6A 82 3E C5 2E 24 45 8B 12 7E C5 1E 45 89 -- 087D40
3D C5 6A 82 3E C5 2E 28 45 8B 12 7E C5 0C 45 89 -- 087D50
3D C5 6A 82 3E C5 2E 26 45 8B 12 7E C5 14 45 89 -- 087D60
FF 2E D8 8B E0 D1 2F 77 00 12 3D 34 EB 12 45 89 -- 087D70
9B 69 2B 69 2B 69 2B 68 C5 68 C5 68 9B 69 05 A7 -- 087D80
2B 69 2B 69 2B 69 2B 69 2B 69 2B 69 2B 69 2B 68 -- 087D90
2E 1A 76 FF 1C 76 FF 68 AD 68 AD 69 2B 69 2B 69 -- 087DA0
E6 1C 9A 01 6A 07 6A 6A 82 36 FF 2E 6A 84 36 FF -- 087DB0
45 8B 12 7E C5 0D 75 08 0A 7E 83 0C C4 83 00 5C -- 087DC0
76 FF 0E 75 05 0A 7E 83 04 45 89 12 7E C5 40 06 -- 087DD0
CB 5E 5F C9 04 C4 83 00 64 4E E3 9A 0E 76 FF 10 -- 087DE0
2B 26 06 45 8B 10 7E C5 10 76 C4 EC 8B 55 57 56 -- 087DF0
2E 1E 45 89 3D C5 6A 82 3E C5 2E 40 04 44 01 FE -- 087E00
89 20 45 89 0E 56 8B 0C 46 8B 3D C5 6A 82 3E C5 -- 087E10
8B 10 55 89 0E 45 89 3D C5 6A 82 3E C5 2E 22 55 -- 087E20
C5 6A 82 3E C5 2E 04 45 8B 10 7E C5 34 EB 0A 46 -- 087E30
82 3E C5 2E 04 45 8B 10 7E C5 52 EB 26 45 89 3D -- 087E40
82 3E C5 2E 04 45 8B 10 7E C5 14 45 89 3D C5 6A -- 087E50
8B E0 D1 2B 77 00 10 3D 30 EB 26 45 89 3D C5 6A -- 087E60
69 C6 69 C6 69 B4 69 B4 69 B4 69 F6 A7 FF 2E D8 -- 087E70
6A 18 6A 18 69 C6 69 C6 69 C6 69 C6 69 B4 69 C6 -- 087E80
10 7E C5 12 EB 0A 46 8B 69 C6 69 C6 69 C6 69 C6 -- 087E90
3D 1C EB 14 45 89 3D C5 6A 82 3E C5 2E 04 45 8B -- 087EA0
1D 6A 1D 6A 3D A7 FF 2E D8 8B E0 D1 17 77 00 06 -- 087EB0
76 FF 16 76 FF 6A 1D 6A 4B 6A 4B 6A 4B 6A 1D 6A -- 087EC0
9A 01 6A 07 6A 6A 82 36 FF 2E 6A 84 36 FF 2E 14 -- 087ED0
10 7E C5 0D 75 08 0A 7E 83 0C C4 83 00 5C E6 1C -- 087EE0
14 46 CB 5E 5F C9 04 45 89 10 7E C5 40 06 45 8B -- 087EF0
```

```
57 56 00 6C 15 46 00 6C 29 F2 00 6C 14 42 00 6C -- 087F00
8D 16 2E 74 00 3D 83 77 D4 3E C5 2E 00 00 02 C8 -- 087F10
77 44 9A 77 D8 36 FF 2E 77 DA 36 FF 2E 50 FE 46 -- 087F20
C5 2E 00 01 05 C7 77 DC 3E C5 2E 08 C4 83 00 1C -- 087F30
CB 5E 5F C9 00 1C 72 57 9A 00 01 05 C7 77 E0 3E -- 087F40
50 D8 46 8D 16 00 00 D6 46 C7 00 00 46 C8 57 56 -- 087F50
E4 3E C5 2E E8 46 D9 9B 04 C4 83 00 5C E0 79 9A -- 087F60
5D D9 9B 77 E4 3E C5 2E EC 46 D9 9B 1D D9 9B 77 -- 087F70
7C 02 D4 7E 83 D4 46 FF 03 EB 00 00 D4 46 C7 04 -- 087F80
2E 77 E8 36 03 2E 02 E6 C1 D4 76 8B 00 85 E9 03 -- 087F90
2E 77 E4 3E 03 2E 02 E7 C1 D4 7E 8B 77 EA 06 8E -- 087FA0
00 5C ED 94 9A 1C D8 26 9B 05 D9 9B 77 E6 1E 8E -- 087FB0
1E 8E 2E 77 E8 3E 03 2E 02 E7 C1 D4 7E 8B C6 73 -- 087FC0
2E 02 E7 C1 D4 7E 8B D0 5E D9 9B 05 D9 9B 77 EA -- 087FD0
C1 D4 7E 8B 05 D9 9B 77 E6 1E 8E 2E 77 E4 3E 03 -- 087FE0
8B 1D D9 9B 77 EA 1E 8E 2E 77 E8 3E 03 2E 02 E7 -- 087FF0
E6 1E 8E 2E 77 E4 3E 03 2E 02 E7 C1 D4 7E 01 FE -- 088000
77 D4 3E C5 2E FF 6F E9 1D D9 9B D0 46 D9 9B 77 -- 088010
9B 77 EC 3E C5 2E 00 54 72 B4 9A 55 74 00 3D 83 -- 088020
3E C5 2E 1D D9 9B 2D D8 9B 77 E8 3E C5 2E 05 D9 -- 088030
1D D9 9B 2D D8 9B 77 E4 3E C5 2E 05 D9 9B 77 EC -- 088040
6D D8 9B 77 E8 3E C5 2E 05 D9 9B 77 F0 3E C5 2E -- 088050
3E C5 2E 05 D9 9B 77 F0 3E C5 2E 04 5D D9 9B 04 -- 088060
6A 50 D6 46 8D 16 04 5D D9 9B 04 6D D8 9B 77 E4 -- 088070
77 EA 36 FF 2E 77 E4 36 FF 2E 77 E6 36 FF 2E 00 -- 088080
46 8D 16 0E C4 83 00 2C 1B 57 9A 77 E8 36 FF 2E -- 088090
36 FF 2E 01 6A 16 6A 35 FF 77 F8 3E C5 2E 50 D6 -- 0880A0
2E 0E C4 83 00 1C 79 02 9A 77 F4 36 FF 2E 77 F6 -- 0880B0
3D 83 77 D4 3E C5 2E 31 75 00 3D 83 77 FC 3E C5 -- 0880C0
2E 35 FF 78 04 3E C5 2E 50 D6 46 8D 16 27 74 00 -- 0880D0
36 FF 2E 77 DA 36 FF 2E 02 6A 35 FF 78 00 3E C5 -- 0880E0
9B 00 1C 82 6B 9A 0E C4 83 00 1C 79 02 9A 77 D8 -- 0880F0
9A 50 D8 46 8D 16 00 00 28 C8 57 56 CB 5E 5F C9 -- 088100
A7 9A 50 D8 46 2B 02 00 B8 04 C4 83 00 5C E0 79 -- 088110
80 B8 1D D9 9B 78 08 3E C5 2E 02 C4 83 00 5C ED -- 088120
3E C5 2E 02 C4 83 00 5C ED A7 9A 50 DA 46 2B 01 -- 088130
56 CB 5E 5F C9 9B 00 5C 23 D1 9A 1D D9 9B 78 0C -- 088140
83 77 D4 3E C5 2E 00 00 FE 46 C7 00 00 02 C8 57 -- 088150
00 6A 50 FE 46 8D 16 00 54 72 B4 9A 05 74 00 3D -- 088160
3E C5 2E 50 FE 46 8D 16 06 C4 83 00 34 EF B7 9A -- 088170
36 FF 2E 77 F6 36 FF 2E 01 6A 16 6A 35 FF 77 F8 -- 088180
83 77 FC 3E C5 2E 0E C4 83 00 1C 79 02 9A 77 F4 -- 088190
8D 16 27 74 00 3D 83 77 D4 3E C5 2E 31 75 00 3D -- 0881A0
FF 78 00 3E C5 2E 35 FF 78 04 3E C5 2E 50 FE 46 -- 0881B0
79 02 9A 77 D8 36 FF 2E 77 DA 36 FF 2E 02 6A 35 -- 0881C0
57 56 CB 5E 5F C9 00 1C 82 6B 9A 0E C4 83 00 1C -- 0881D0
D9 9B 78 14 3E C5 2E 00 00 FE 46 C7 00 00 02 C8 -- 0881E0
D9 9B 78 1C 3E C5 2E 1D D9 9B 78 10 3E C5 2E 05 -- 0881F0
50 FE 46 8D 16 1D D9 9B 78 18 3E C5 2E 05 01 FE -- 088200
2C 00 00 9A 78 10 36 FF 2E 78 12 36 FF 2E 02 6A -- 088210
56 66 9A FE 76 FF 0B 74 00 FE 7E 83 0A C4 83 00 -- 088220
2C 11 03 9A 01 6A 50 FE 46 8D 16 02 C4 83 00 44 -- 088230
56 66 9A FE 76 FF 0B 74 00 FE 7E 83 06 C4 83 00 -- 088240
2C 11 03 9A 00 6A 50 FE 46 8D 16 02 C4 83 00 44 -- 088250
59 DC 9A FE 76 FF 0D 74 00 FE 7E 83 06 C4 83 00 -- 088260
F8 3E C5 2E 50 FE 46 8D 16 30 EB 02 C4 83 00 64 -- 088270
F4 36 FF 2E 77 F6 36 FF 2E 01 6A 16 6A 35 FF 77 -- 088280
05 C7 77 E0 3E C5 2E 0E C4 83 00 1C 79 02 9A 77 -- 088290

02 C8 57 56 CB 5E 5F C9 9B 00 1C 82 6B 9A 00 01 -- 0882A0
```

```
74 00 3D 83 77 D4 3E C5 2E 00 00 FE 46 C7 00 00 -- 0882B0
05 74 00 3D 83 78 20 3E C5 2E 00 54 72 B4 9A 05 -- 0882C0
2C 11 03 9A 00 6A 50 FE 46 8D 16 00 54 46 A1 9A -- 0882D0
59 DC 9A FE 76 FF 0D 74 00 FE 7E 83 06 C4 83 00 -- 0882E0
F8 3E C5 2E 50 FE 46 8D 16 6B EB 02 C4 83 00 64 -- 0882F0
F4 36 FF 2E 77 F6 36 FF 2E 01 6A 16 6A 35 FF 77 -- 088300
3D 83 77 FC 3E C5 2E 0E C4 83 00 1C 79 02 9A 77 -- 088310
46 8D 16 27 74 00 3D 83 77 D4 3E C5 2E 31 75 00 -- 088320
35 FF 78 00 3E C5 2E 35 FF 78 04 3E C5 2E 50 FE -- 088330
1C 79 02 9A 77 D8 36 FF 2E 77 DA 36 FF 2E 02 6A -- 088340
82 6B 9A 00 01 05 C7 77 E0 3E C5 2E 0E C4 83 00 -- 088350
24 06 DF 2E 9B EC 8B 55 57 56 CB 5E 5F C9 00 1C -- 088360
0C 3E C5 2E EE D9 9B 1D D9 9B 78 08 3E C5 2E 78 -- 088370
57 56 CB 5E 5F C9 9B 00 54 6F 82 9A 1D D9 9B 78 -- 088380
D9 9B 78 08 3E C5 2E 78 26 06 DF 2E 9B EC 8B 55 -- 088390
54 6F 82 9A 1D D9 9B 78 0C 3E C5 2E EE D9 9B 1D -- 0883A0
C5 2E EE D9 9B EC 8B 55 57 56 CB 5E 5F C9 9B 00 -- 0883B0
0C 3E C5 2E 78 28 06 DF 2E 9B 1D D9 9B 78 08 3E -- 0883C0
57 56 CB 5E 5F C9 9B 00 54 6F 82 9A 1D D9 9B 78 -- 0883D0
2E 9B 1D D9 9B 78 08 3E C5 2E EE D9 9B EC 8B 55 -- 0883E0
54 6F 82 9A 1D D9 9B 78 0C 3E C5 2E 78 2A 06 DF -- 0883F0
46 C7 00 00 2A C8 57 56 CB 5E 5F C9 9B 00 01 FE -- 088400
04 C4 83 00 2C 20 49 9A 50 DE 46 8D 16 00 00 FE -- 088410
2E 00 54 72 B4 9A 38 74 00 3D 83 77 D4 3E C5 2E -- 088420
2E DE 56 D9 9B DE 6E D8 9B 05 D9 9B 77 EC 3E C5 -- 088430
9B 05 D9 9B 77 F0 3E C5 2E 1D D9 9B 77 E8 3E C5 -- 088440
04 5D D9 9B 77 E8 3E C5 2E E2 56 D9 9B E2 6E D8 -- 088450
D9 9B 1D D9 9B 77 E8 3E C5 2E DE 46 D9 9B 19 EB -- 088460
77 E8 3E C5 2E 04 5D D9 9B 77 E8 3E C5 2E E2 46 -- 088470
2E 1D D9 9B 77 E4 3E C5 2E EA 46 D8 9B 05 D9 9B -- 088480
E4 3E C5 2E E6 46 D8 9B 04 45 D9 9B 77 E8 3E C5 -- 088490
E6 36 FF 2E 00 6A 50 FE 46 8D 16 04 5D D9 9B 77 -- 0884A0
77 E8 36 FF 2E 77 EA 36 FF 2E 77 E4 36 FF 2E 77 -- 0884B0
2E 00 6A 50 FE 46 8D 16 0E C4 83 00 2C 1B 57 9A -- 0884C0
C4 83 00 2C 25 F5 9A 78 08 36 FF 2E 78 0A 36 FF -- 0884D0
83 00 64 59 DC 9A FE 76 FF 0B 74 00 FE 7E 83 0A -- 0884E0
2E 04 C4 83 00 2C 20 49 9A 50 EE 46 8D 16 02 C4 -- 0884F0
00 5C ED 94 9A 1D D8 9B EE 46 D9 9B 78 18 3E C5 -- 088500
94 9A 1D D8 9B F2 46 D9 9B 78 10 3E C5 2E 16 77 -- 088510
DD 9B 78 26 06 DF 2E 9B 01 25 E9 03 77 00 5C ED -- 088520
94 9A D6 5E DC 9B 05 D9 9B 78 08 3E C5 2E D6 5E -- 088530
78 08 3E C5 2E 78 24 06 DF 2E 9B 2A 75 00 5C ED -- 088540
2E 78 0A 36 FF 2E 00 6A 50 FE 46 8D 16 1D D9 9B -- 088550
9B 00 D1 E9 0A C4 83 00 2C 25 F5 9A 78 08 36 FF -- 088560
D9 9B 78 08 3E C5 2E D6 5E DD 9B 78 24 06 DF 2E -- 088570
06 DF 2E 9B 2A 75 00 5C ED 94 9A D6 5E DC 9B 05 -- 088580
6A 50 FE 46 8D 16 1D D9 9B 78 08 3E C5 2E 78 26 -- 088590
00 2C 25 F5 9A 78 08 36 FF 2E 78 0A 36 FF 2E 00 -- 0885A0
D6 5E DD 9B 78 2A 06 DF 2E 9B 00 8A E9 0A C4 83 -- 0885B0
5C ED 94 9A D6 5E DC 9B 05 D9 9B 78 0C 3E C5 2E -- 0885C0
D9 9B 78 0C 3E C5 2E 78 28 06 DF 2E 9B 29 75 00 -- 0885D0
36 FF 2E 78 0A 36 FF 2E 00 6A 50 FE 46 8D 16 1D -- 0885E0
06 DF 2E 9B 44 EB 0A C4 83 00 2C 25 F5 9A 78 08 -- 0885F0
05 D9 9B 78 0C 3E C5 2E D6 5E DD 9B 78 28 01 FE -- 088600
2A 06 DF 2E 9B 27 75 00 5C ED 94 9A D6 5E DC 9B -- 088610
00 6A 50 FE 46 8D 16 1D D9 9B 78 0C 3E C5 2E 78 -- 088620
83 00 2C 25 F5 9A 78 08 36 FF 2E 78 0A 36 FF 2E -- 088630

83 04 C4 83 00 2C 20 49 9A 50 EE 46 8D 16 0A C4 -- 088640
02 C4 83 00 64 59 DC 9A FE 76 FF 0B 74 00 FE 7E -- 088650
```

601

```
01  6A  16  6A  35  FF  77  F8  3E  C5  2E  50  FE  46  8D  16  --  088660
83  00  1C  79  02  9A  77  F4  36  FF  2E  77  F6  36  FF  2E  --  088670
D4  3E  C5  2E  31  75  00  3D  83  77  FC  3E  C5  2E  0E  C4  --  088680
78  04  3E  C5  2E  50  FE  46  8D  16  27  74  00  3D  83  77  --  088690
77  DA  36  FF  2E  02  6A  35  FF  78  00  3E  C5  2E  35  FF  --  0886A0
46  D9  9B  0E  C4  83  00  1C  79  02  9A  77  D8  36  FF  2E  --  0886B0
F2  46  D9  9B  2D  75  00  5C  ED  94  9A  DE  5E  D8  9B  EE  --  0886C0
9B  F6  46  D9  9B  1E  75  00  5C  ED  94  9A  E2  5E  D8  9B  --  0886D0
D8  9B  FA  46  D9  9B  0F  75  00  5C  ED  94  9A  E6  5E  D8  --  0886E0
C9  9B  00  1C  82  6B  9A  05  74  00  5C  ED  94  9A  EA  5E  --  0886F0
83  00  54  74  A0  9A  03  6A  EC  8B  55  57  56  CB  5E  5F  --  088700
74  A0  9A  02  6A  EC  8B  55  57  56  CB  5E  5F  C9  02  C4  --  088710
01  6A  EC  8B  55  57  56  CB  5E  5F  C9  02  C4  83  00  54  --  088720
12  C8  57  56  CB  5E  5F  C9  02  C4  83  00  54  74  A0  9A  --  088730
D8  36  FF  2E  77  DA  36  FF  2E  50  FE  46  8D  16  00  00  --  088740
C5  2E  78  30  36  C4  2E  08  C4  83  00  1C  77  44  9A  77  --  088750
73  00  5C  ED  94  9A  1C  D8  26  9B  05  D9  9B  78  2C  3E  --  088760
78  30  3E  C5  2E  08  EB  05  D9  9B  78  2C  3E  C5  2E  0A  --  088770
78  38  36  C4  2E  1D  D9  9B  77  F0  3E  C5  2E  05  D9  9B  --  088780
5C  ED  94  9A  1C  D8  26  9B  05  D9  9B  78  34  3E  C5  2E  --  088790
3E  C5  2E  08  EB  05  D9  9B  78  34  3E  C5  2E  0A  73  00  --  0887A0
3E  C5  2E  1D  D9  9B  77  EC  3E  C5  2E  05  D9  9B  78  38  --  0887B0
1D  D9  9B  2D  D8  9B  78  2C  3E  C5  2E  05  D9  9B  77  F0  --  0887C0
2D  D8  9B  78  34  3E  C5  2E  05  D9  9B  77  EC  3E  C5  2E  --  0887D0
78  30  3E  C5  2E  05  D9  9B  77  F0  3E  C5  2E  1D  D9  9B  --  0887E0
C5  2E  1D  D9  9B  78  3C  3E  C5  2E  15  D9  9B  2D  D8  9B  --  0887F0
2D  D8  9B  78  38  3E  C5  2E  05  D9  9B  77  EC  3E  01  FE  --  088800
78  44  36  C4  2E  1D  D9  9B  78  40  3E  C5  2E  15  D9  9B  --  088810
FA  5E  D9  9B  04  D8  26  9B  05  D9  9B  78  30  3E  C5  2E  --  088820
D8  26  9B  05  D9  9B  78  38  3E  C5  2E  78  48  36  C4  2E  --  088830
9B  78  2C  3E  C5  2E  78  14  36  C4  2E  F6  5E  D9  9B  04  --  088840
2E  78  1C  36  C4  2E  F2  5E  D9  9B  04  D8  26  9B  05  D9  --  088850
9B  EE  5E  D9  9B  04  D8  26  9B  05  D9  9B  78  34  3E  C5  --  088860
D9  9B  06  76  00  5C  ED  94  9A  F2  5E  D8  9B  FA  46  D9  --  088870
1D  D9  9B  78  10  3E  C5  2E  F2  46  D9  9B  04  EB  FA  46  --  088880
9B  06  76  00  5C  ED  94  9A  EE  5E  D8  9B  F6  46  D9  9B  --  088890
D9  9B  78  18  3E  C5  2E  EE  46  D9  9B  04  EB  F6  46  D9  --  0888A0
78  38  3E  C5  2E  20  74  00  3D  83  77  FC  3E  C5  2E  1D  --  0888B0
78  30  3E  C5  2E  1D  D9  9B  78  4C  3E  C5  2E  05  D9  9B  --  0888C0
50  FE  46  8D  16  1D  D9  9B  78  50  3E  C5  2E  05  D9  9B  --  0888D0
2C  00  00  9A  78  10  36  FF  2E  78  12  36  FF  2E  02  6A  --  0888E0
56  66  9A  FE  76  FF  0B  74  00  FE  7E  83  0A  C4  83  00  --  0888F0
2C  11  03  9A  01  6A  50  FE  46  8D  16  02  C4  83  00  44  --  088900
56  66  9A  FE  76  FF  0B  74  00  FE  7E  83  06  C4  83  00  --  088910
00  00  1A  C8  57  56  CB  5E  5F  C9  9B  02  C4  83  00  44  --  088920
9A  77  D8  36  FF  2E  77  DA  36  FF  2E  50  FE  46  8D  16  --  088930
3E  C5  2E  02  1E  E9  0A  46  8B  08  C4  83  00  1C  77  44  --  088940
15  D9  9B  2D  D8  9B  78  38  3E  C5  2E  05  D9  9B  78  34  --  088950
05  D9  9B  78  2C  3E  C5  2E  1D  D9  9B  78  40  3E  C5  2E  --  088960
78  3C  3E  C5  2E  15  D9  9B  2D  D8  9B  78  30  3E  C5  2E  --  088970
D9  9B  1D  D9  9B  78  34  3E  C5  2E  EE  D9  9B  1D  D9  9B  --  088980
D9  9B  78  14  3E  C5  2E  1D  D9  9B  78  2C  3E  C5  2E  EE  --  088990
D9  9B  78  1C  3E  C5  2E  1D  D9  9B  78  10  3E  C5  2E  05  --  0889A0
38  3E  C5  2E  01  C7  E9  1D  D9  9B  78  18  3E  C5  2E  05  --  0889B0
2E  1D  D9  9B  2D  D8  9B  78  34  3E  C5  2E  05  D9  9B  78  --  0889C0
9B  2D  D8  9B  78  2C  3E  C5  2E  05  D9  9B  78  30  3E  C5  --  0889D0

3E  C5  2E  15  D9  9B  78  38  3E  C5  2E  EE  D9  9B  1D  D9  --  0889E0
15  D9  9B  78  30  3E  C5  2E  EE  D9  9B  1D  D9  9B  78  40  --  0889F0
9B  78  44  3E  C5  2E  1D  D9  9B  78  3C  3E  C5  2E  01  FE  --  088A00
```

602

```
9B 78 48 3E C5 2E 1D D9 9B 78 10 3E C5 2E 05 D9 -- 088A10
36 C4 2E 01 58 E9 1D D9 9B 78 18 3E C5 2E 05 D9 -- 088A20
94 9A 1C D8 26 9B 05 D9 9B 78 2C 3E C5 2E 78 30 -- 088A30
2E 08 EB 05 D9 9B 78 2C 3E C5 2E 0A 73 00 5C ED -- 088A40
78 38 36 C4 2E FA 5E D9 9B 05 D9 9B 78 30 3E C5 -- 088A50
5C ED 94 9A 1C D8 26 9B 05 D9 9B 78 34 3E C5 2E -- 088A60
3E C5 2E 08 EB 05 D9 9B 78 34 3E C5 2E 0A 73 00 -- 088A70
3E C5 2E FA 46 D9 9B F6 5E D9 9B 05 D9 9B 78 38 -- 088A80
34 3E C5 2E F6 46 D9 9B 1D D9 9B 2D D8 9B 78 2C -- 088A90
78 30 3E C5 2E FA 46 D9 9B 1D D9 9B 2D D8 9B 78 -- 088AA0
D9 9B 1D D9 9B 78 3C 3E C5 2E 15 D9 9B 2D D8 9B -- 088AB0
3E C5 2E 15 D9 9B 2D D8 9B 78 38 3E C5 2E F6 46 -- 088AC0
9B 78 30 3E C5 2E 78 44 36 C4 2E 1D D9 9B 78 40 -- 088AD0
2E 78 48 36 C4 2E F2 5E D9 9B 04 D8 26 9B 05 D9 -- 088AE0
2E EE 5E D9 9B 04 D8 26 9B 05 D9 9B 78 38 3E C5 -- 088AF0
04 D8 26 9B 05 D9 9B 78 2C 3E C5 2E 78 14 36 C4 -- 088B00
D9 9B 78 34 3E C5 2E 78 1C 36 C4 2E EA 5E D9 9B -- 088B10
5E D8 9B F2 46 D9 9B E6 5E D9 9B 04 D8 26 9B 05 -- 088B20
D9 9B 04 EB F2 46 D9 9B 06 76 00 5C ED 94 9A EA -- 088B30
D8 9B EE 46 D9 9B 1D D9 9B 78 10 3E C5 2E EA 46 -- 088B40
9B 04 EB EE 46 D9 9B 06 76 00 5C ED 94 9A E6 5E -- 088B50
02 3D 48 18 EB 1D D9 9B 78 18 3E C5 2E E6 46 D9 -- 088B60
C3 76 F3 A7 FF 2E D8 8B E0 D1 00 E4 E9 03 76 00 -- 088B70
2E 20 74 00 3D 83 77 FC 3E C5 2E 75 A1 75 32 74 -- 088B80
2E 1D D9 9B 78 4C 3E C5 2E 05 D9 9B 78 38 3E C5 -- 088B90
16 1D D9 9B 78 50 3E C5 2E 05 D9 9B 78 30 3E C5 -- 088BA0
78 10 36 FF 2E 78 12 36 FF 2E 02 6A 50 FE 46 8D -- 088BB0
76 FF 0B 74 00 FE 7E 83 0A C4 83 00 2C 00 00 9A -- 088BC0
01 6A 50 FE 46 8D 16 02 C4 83 00 44 56 66 9A FE -- 088BD0
76 FF 0B 74 00 FE 7E 83 06 C4 83 00 2C 11 03 9A -- 088BE0
C5 2E 50 FE 46 8D 16 02 C4 83 00 44 56 66 9A FE -- 088BF0
77 F6 36 FF 2E 01 6A 16 6A 35 FF 77 F8 3E 01 FE -- 088C00
3E C5 2E 0E C4 83 00 1C 79 02 9A 77 F4 36 FF 2E -- 088C10
04 3E C5 2E 50 FE 46 8D 16 27 75 00 3D 83 77 FC -- 088C20
DA 36 FF 2E 02 6A 35 FF 78 00 3E C5 2E 35 FF 78 -- 088C30
C5 2E 0E C4 83 00 1C 79 02 9A 77 D8 36 FF 2E 77 -- 088C40
5E 5F C9 9B 00 1C 82 6B 9A 00 01 05 C7 77 E0 3E -- 088C50
27 C4 00 3C 2F 98 00 3C 2F DC 00 3C 2F A6 00 CB -- 088C60
32 D4 00 6C 32 D8 00 6C 1C 16 00 6C 32 C4 00 6C -- 088C70
2F 9A 00 3C 90 C2 00 3C 38 74 00 3C 90 36 00 6C -- 088C80
32 DC 00 6C 32 D0 00 6C 32 CC 00 3C 91 10 00 3C -- 088C90
38 6A 00 3C 90 7A 00 6C 32 E0 00 3C 90 7E 00 6C -- 088CA0
30 4A 00 3C 90 A4 FD 76 02 8A FC 7C 03 84 00 3C -- 088CB0
38 6C 00 3C 38 70 00 3C 30 46 00 3C 90 A0 00 3C -- 088CC0
28 E4 00 6C 28 E0 00 3C 30 4E 00 3C 30 52 00 3C -- 088CD0
89 85 D8 3E C5 2E 0A 46 8B EC 8B 55 57 56 00 6C -- 088CE0
8B 85 DC 3E C5 2E EC 8B 55 57 56 CB 5E 5F C9 05 -- 088CF0
83 85 E0 3E C5 2E 1E EB C0 2B 04 75 FF FF 3D 05 -- 088D00
05 75 00 02 3D 05 8B 85 E0 3E C5 2E 0C 74 00 3D -- 088D10
8B 55 57 56 CB 5E 5F C9 00 02 B8 03 EB 00 01 B8 -- 088D20
36 FF 2E 1C 75 FF FF 3D 05 8B 85 DC 3E C5 2E EC -- 088D30
6A 04 C4 83 00 14 F4 F5 9A 85 DC 36 FF 2E 85 DE -- 088D40
56 CB 5E 5F C9 C0 2B 02 C4 83 00 54 7C CD 9A 00 -- 088D50
74 FF FF 3D 05 8B 85 DC 3E C5 2E 00 00 06 C8 57 -- 088D60
00 B5 E9 C0 2B 05 75 00 3D 83 85 E0 3E C5 2E 0A -- 088D70

8B 85 E4 3E C5 2E FA 46 88 05 8B 85 D8 3E C5 2E -- 088D80
50 FA 46 8D 16 50 FC 46 8D 16 1F 75 00 03 3D 05 -- 088D90
B7 9A 0E C4 83 00 64 40 D0 9A 6E 6A 05 6A 01 6A -- 088DA0
9A FE 46 89 05 8B 85 E0 3E C5 2E 7E EB 00 54 83 -- 088DB0
```

603

```
01  6A  50  FA  46  8D  16  50  FC  46  8D  16  00  54  85  27  --  088DC0
FC  46  8D  16  0E  C4  83  00  64  40  D0  9A  6E  6A  05  6A  --  088DD0
0A  C4  83  00  64  40  D0  9A  01  2D  68  03  6A  09  6A  50  --  088DE0
64  40  D0  9A  01  2F  68  03  6A  09  6A  50  FC  46  8D  16  --  088DF0
83  00  54  82  C0  9A  00  6A  00  6A  0A  C4  83  00  01  FE  --  088E00
B7  9A  00  6A  50  FC  46  8D  16  00  5C  28  00  9A  04  C4  --  088E10
C5  2E  FE  46  8B  00  54  85  8D  9A  06  C4  83  00  34  EF  --  088E20
00  04  C8  57  56  CB  5E  5F  C9  C0  2B  05  89  85  E0  3E  --  088E30
3E  C5  2E  0A  74  FF  FF  3D  05  8B  85  DC  3E  C5  2E  00  --  088E40
D8  3E  C5  2E  01  29  E9  C0  2B  05  75  00  3D  83  85  E0  --  088E50
00  03  3D  05  8B  85  E4  3E  C5  2E  FE  46  88  05  8B  85  --  088E60
05  6A  01  6A  50  FE  46  8D  16  50  FC  46  8D  16  48  75  --  088E70
6A  50  FC  46  8D  16  0E  C4  83  00  64  40  D0  9A  6E  6A  --  088E80
8D  16  0A  C4  83  00  64  40  D0  9A  01  2D  68  03  6A  09  --  088E90
83  00  64  40  D0  9A  01  2F  68  03  6A  09  6A  50  FC  46  --  088EA0
16  00  54  85  27  9A  00  C9  E9  00  54  84  97  9A  0A  C4  --  088EB0
9A  6E  6A  05  6A  01  6A  50  FE  46  8D  16  50  FC  46  8D  --  088EC0
03  6A  09  6A  50  FC  46  8D  16  0E  C4  83  00  64  40  D0  --  088ED0
50  FC  46  8D  16  0A  C4  83  00  64  40  D0  9A  01  2D  68  --  088EE0
2E  0A  C4  83  00  64  40  D0  9A  01  2F  68  03  6A  09  6A  --  088EF0
8D  16  00  5C  28  00  9A  75  74  00  3D  83  85  E0  3E  C5  --  088F00
36  FF  2E  85  EC  36  FF  2E  85  EE  36  FF  2E  50  FC  46  --  088F10
07  6A  35  FF  85  E0  3E  C5  2E  85  E8  36  FF  2E  85  EA  --  088F20
85  E0  3E  C5  2E  12  C4  83  00  64  40  D0  9A  00  CA  68  --  088F30
EE  36  FF  2E  50  FC  46  8D  16  28  75  00  02  3D  05  8B  --  088F40
85  E8  36  FF  2E  85  EA  36  FF  2E  85  EC  36  FF  2E  85  --  088F50
16  12  C4  83  00  64  40  D0  9A  00  C9  68  07  6A  02  6A  --  088F60
8D  9A  06  C4  83  00  34  EF  B7  9A  00  6A  50  FC  46  8D  --  088F70
C5  2E  EC  8B  55  57  56  CB  5E  5F  C9  C0  2B  00  54  85  --  088F80
C0  9A  00  6A  01  6A  29  74  FF  FF  3D  05  8B  85  DC  3E  --  088F90
F8  4D  9A  35  FF  85  DC  3E  C5  2E  04  C4  83  00  54  82  --  088FA0
4B  9A  FF  FF  05  C7  85  DC  3E  C5  2E  02  C4  83  00  14  --  088FB0
C5  2E  EC  8B  55  57  56  CB  5E  5F  C9  C0  2B  00  4C  19  --  088FC0
54  82  C0  9A  01  6A  01  6A  11  74  00  3D  83  85  E0  3E  --  088FD0
56  CB  5E  5F  C9  C0  2B  00  4C  19  4B  9A  04  C4  83  00  --  088FE0
5F  C9  05  89  85  E4  3E  C5  2E  0A  46  8B  EC  8B  55  57  --  088FF0
14  45  D9  9B  0C  7E  C5  EC  8B  55  57  56  CB  5E  01  FE  --  089000
5C  ED  99  9A  10  45  D9  9B  0C  7E  C5  00  5C  ED  99  9A  --  089010
C9  9B  C0  2B  12  C4  83  00  54  7C  CD  9A  0A  76  FF  00  --  089020
79  9A  50  D8  46  8D  16  00  00  28  C8  57  56  CB  5E  5F  --  089030
9B  00  5C  ED  99  9A  EC  46  D9  9B  04  C4  83  00  5C  E0  --  089040
83  00  54  7C  CD  9A  01  6A  00  5C  ED  99  9A  E8  46  D9  --  089050
16  00  00  28  C8  57  56  CB  5E  5F  C9  9B  C0  2B  12  C4  --  089060
EC  46  D9  9B  04  C4  83  00  5C  E0  79  9A  50  D8  46  8D  --  089070
02  6A  00  5C  ED  99  9A  E8  46  D9  9B  00  5C  ED  99  9A  --  089080
56  CB  5E  5F  C9  9B  C0  2B  12  C4  83  00  54  7C  CD  9A  --  089090
DD  9B  50  00  08  05  1A  46  8B  1C  76  FF  EC  8B  55  57  --  0890A0
FF  0C  C4  83  00  54  7C  4D  9A  00  5C  ED  99  9A  0A  46  --  0890B0
ED  99  9A  12  46  DD  9B  50  00  0F  05  1A  46  8B  1C  76  --  0890C0
56  CB  5E  5F  C9  9B  0C  C4  83  00  54  7C  4D  9A  00  5C  --  0890D0
64  24  00  9A  02  6A  50  DC  46  8D  16  00  00  24  C8  57  --  0890E0
2E  85  F2  36  FF  2E  19  75  4D  DC  7E  80  06  C4  83  00  --  0890F0
C4  83  00  64  5B  B4  9A  50  FA  46  8D  16  85  F0  36  FF  --  089100
46  8D  16  85  F4  36  FF  2E  85  F6  36  FF  2E  17  EB  08  --  089110

99  9A  0A  46  DD  9B  08  C4  83  00  64  5B  B4  9A  50  FA  --  089120
97  5E  9A  50  E6  46  8D  16  50  FA  46  8D  16  00  5C  ED  --  089130
FF  14  76  FF  50  E6  46  8D  16  06  6A  10  C4  83  00  5C  --  089140
56  CB  5E  5F  C9  9B  0A  C4  83  00  64  58  BA  9A  12  76  --  089150
C6  20  FF  7D  86  C6  20  FF  7C  86  C6  00  00  A2  C8  57  --  089160
```

604

```
81 46 C6 20 80 46 C6 20 FF 7F 86 C6 20 FF 7E 86 -- 089170
85 46 C6 48 84 46 C6 20 83 46 C6 20 82 46 C6 20 -- 089180
89 46 C6 68 88 46 C6 67 87 46 C6 69 86 46 C6 65 -- 089190
8D 46 C6 69 8C 46 C6 57 8B 46 C6 20 8A 46 C6 74 -- 0891A0
91 46 C6 20 90 46 C6 68 8F 46 C6 74 8E 46 C6 64 -- 0891B0
95 46 C6 69 94 46 C6 6F 93 46 C6 50 92 46 C6 00 -- 0891C0
99 46 C6 3A 98 46 C6 31 97 46 C6 74 96 46 C6 6E -- 0891D0
9D 46 C6 20 9C 46 C6 20 9B 46 C6 20 9A 46 C6 20 -- 0891E0
A1 46 C6 20 A0 46 C6 20 9F 46 C6 20 9E 46 C6 20 -- 0891F0
C6 20 A4 46 C6 20 A3 46 C6 20 A2 46 C6 20 01 FE -- 089200
C6 50 A8 46 C6 00 A7 46 C6 20 A6 46 C6 20 A5 46 -- 089210
C6 74 AC 46 C6 6E AB 46 C6 69 AA 46 C6 6F A9 46 -- 089220
C6 20 B0 46 C6 20 AF 46 C6 3A AE 46 C6 32 AD 46 -- 089230
C6 20 B4 46 C6 20 B3 46 C6 20 B2 46 C6 20 B1 46 -- 089240
C6 20 B8 46 C6 20 B7 46 C6 20 B6 46 C6 20 B5 46 -- 089250
C6 20 BC 46 C6 20 BB 46 C6 20 BA 46 C6 20 B9 46 -- 089260
C6 73 C0 46 C6 69 BF 46 C6 44 BE 46 C6 00 BD 46 -- 089270
C6 3A C4 46 C6 20 C3 46 C6 27 C2 46 C6 74 C1 46 -- 089280
C6 20 C8 46 C6 20 C7 46 C6 20 C6 46 C6 20 C5 46 -- 089290
C6 20 CC 46 C6 20 CB 46 C6 20 CA 46 C6 20 C9 46 -- 0892A0
C6 20 D0 46 C6 20 CF 46 C6 20 CE 46 C6 20 CD 46 -- 0892B0
C6 52 D4 46 C6 00 D3 46 C6 20 D2 46 C6 20 D1 46 -- 0892C0
C6 72 D8 46 C6 65 D7 46 C6 6C D6 46 C6 75 D5 46 -- 0892D0
C6 20 DC 46 C6 20 DB 46 C6 3A DA 46 C6 20 D9 46 -- 0892E0
C6 20 E0 46 C6 20 DF 46 C6 20 DE 46 C6 20 DD 46 -- 0892F0
C6 20 E4 46 C6 20 E3 46 C6 20 E2 46 C6 20 E1 46 -- 089300
C6 20 E8 46 C6 20 E7 46 C6 20 E6 46 C6 20 E5 46 -- 089310
C6 67 EC 46 C6 6E EB 46 C6 41 EA 46 C6 00 E9 46 -- 089320
C6 3A F0 46 C6 20 EF 46 C6 65 EE 46 C6 6C ED 46 -- 089330
C6 20 F4 46 C6 20 F3 46 C6 20 F2 46 C6 20 F1 46 -- 089340
C6 20 F8 46 C6 20 F7 46 C6 20 F6 46 C6 20 F5 46 -- 089350
C6 20 FC 46 C6 20 FB 46 C6 20 FA 46 C6 20 F9 46 -- 089360
85 DC 3E C5 2E 00 FF 46 C6 20 FE 46 C6 20 FD 46 -- 089370
2E 00 54 85 27 9A 03 C5 E9 03 75 FF FF 3D 05 8B -- 089380
50 FF 66 86 8D 16 FF 6A 86 88 05 8B 85 D8 3E C5 -- 089390
64 40 D0 9A 6E 6A 05 6A 01 6A 50 FF 6A 86 8D 16 -- 0893A0
2D 68 03 6A 09 6A 50 FF 66 86 8D 16 0E C4 83 00 -- 0893B0
6A 50 FF 66 86 8D 16 0A C4 83 00 64 40 D0 9A 01 -- 0893C0
7E 83 0A C4 83 00 64 40 D0 9A 01 2F 68 03 6A 09 -- 0893D0
6A 00 6A 7A 75 01 0A 7E 83 03 33 E9 03 75 00 0A -- 0893E0
3E C5 2E 0C 46 DD 9B 04 C4 83 00 54 82 C0 9A 00 -- 0893F0
85 EC 3E C5 2E 14 46 DD 9B 1D D9 9B 85 E8 01 FE -- 089400
9A 05 74 00 03 3D 05 8B 85 E4 3E C5 2E 1D D9 9B -- 089410
2E 85 EE 36 FF 2E 50 FF 66 86 8D 16 00 5C 28 00 -- 089420
01 6A 85 E8 36 FF 2E 85 EA 36 FF 2E 85 EC 36 FF -- 089430
3E C5 2E 12 C4 83 00 64 40 D0 9A 00 CA 68 07 6A -- 089440
6A 50 FF 66 86 8D 16 10 74 00 03 3D 05 8B 85 E4 -- 089450
C5 2E 50 92 46 8D 16 06 C4 83 00 34 EF B7 9A 00 -- 089460
00 64 53 E8 9A 00 5C ED 99 9A 05 D9 9B 85 E8 3E -- 089470
05 D9 9B 85 EC 3E C5 2E 00 5C ED 99 9A 08 C4 83 -- 089480
ED 99 9A 08 C4 83 00 64 53 E8 9A 00 5C ED 99 9A -- 089490
03 74 02 0A 7E 83 14 C4 83 00 54 7C 0D 9A 00 5C -- 0894A0
04 5D D9 9B 85 E8 3E C5 2E 0C 46 DD 9B 02 69 E9 -- 0894B0

3E C5 2E 04 5D D9 9B 85 EC 3E C5 2E 14 46 DD 9B -- 0894C0
8D 16 00 5C 28 00 9A 05 74 00 03 3D 05 8B 85 E4 -- 0894D0
04 05 85 EC 06 8B 2E 85 EE 36 FF 2E 50 FF 66 86 -- 0894E0
50 00 04 05 85 E8 06 8B 2E 85 EA 36 FF 2E 50 00 -- 0894F0
16 12 C4 83 00 64 40 D0 9A 00 CA 68 07 6A 01 6A -- 089500
2E 85 EC 36 FF 2E 85 EE 36 FF 2E 50 FF 66 86 8D -- 089510
```

605

```
00 C9 68 07 6A 02 6A 85 E8 36 FF 2E 85 EA 36 FF -- 089520
3D 05 8B 85 E4 3E C5 2E 12 C4 83 00 64 40 D0 9A -- 089530
34 EF B7 9A 00 6A 50 FF 66 86 8D 16 10 74 00 03 -- 089540
D9 9B 85 E8 3E C5 2E 50 A8 46 8D 16 06 C4 83 00 -- 089550
9A 08 C4 83 00 64 53 E8 9A 00 5C ED 99 9A 04 45 -- 089560
ED 99 9A 04 45 D9 9B 85 EC 3E C5 2E 00 5C ED 99 -- 089570
9A 00 5C ED 99 9A 08 C4 83 00 64 53 E8 9A 00 5C -- 089580
EC 3E C5 2E 85 EC 36 C4 2E 14 C4 83 00 54 7C 0D -- 089590
E8 9A 00 5C ED 99 9A 24 D8 26 9B 04 45 D9 9B 85 -- 0895A0
85 E8 36 C4 2E FF 6C 9E D9 9B 08 C4 83 00 64 53 -- 0895B0
ED 99 9A 24 D8 26 9B 04 45 D9 9B 85 E8 3E C5 2E -- 0895C0
16 FF 70 9E D9 9B 08 C4 83 00 64 53 E8 9A 00 5C -- 0895D0
D9 9B 00 5C ED 99 9A FF 70 86 D9 9B 50 BE 46 8D -- 0895E0
14 C4 83 00 54 7C 0D 9A 00 5C ED 99 9A FF 6C 86 -- 0895F0
9A FF 6C 86 D9 9B FF 5E 9E DD 9B EE D9 9B 01 FE -- 089600
78 9A 00 5C ED 99 9A FF 70 86 D9 9B 00 5C ED 99 -- 089610
00 5C ED 94 9A FF 5E 9E DC 9B 10 C4 83 00 64 53 -- 089620
70 86 D9 9B 00 5C ED 99 9A FF 6C 86 D9 9B 1E 76 -- 089630
1F EB 10 C4 83 00 64 53 78 9A 00 5C ED 99 9A FF -- 089640
9A FF 70 86 D9 9B 00 5C ED 99 9A FF 6C 86 D9 9B -- 089650
9B E0 D9 9B 10 C4 83 00 64 53 78 9A 00 5C ED 99 -- 089660
99 9A FF 78 86 D9 9B 50 DC 46 8D 16 FF 78 9E D9 -- 089670
DD 9B EE D9 9B 0C C4 83 00 54 7C 4D 9A 00 5C ED -- 089680
ED 94 9A FF 5E 9E DC 9B FF 70 86 D9 9B FF 5E 9E -- 089690
FF 70 86 D9 9B 08 EB FF 70 86 D9 9B 07 76 00 5C -- 0896A0
08 73 00 5C ED 94 9A 85 F8 1E DC 2E 9B E0 D9 9B -- 0896B0
B6 D8 9B FF 6C 86 D9 9B 3B EB 00 5A FF 68 86 C7 -- 0896C0
9B 08 C4 83 00 64 3E 62 9A 00 5C ED 99 9A FF 70 -- 0896D0
86 D9 9B FF 74 9E D9 9B E0 D9 9B 86 00 0E DC 2E -- 0896E0
89 08 C4 83 00 5C ED F9 9A 00 5C ED 99 9A FF 74 -- 0896F0
08 36 FF 2E 86 0A 36 FF 2E FF 68 B6 FF FF 68 86 -- 089700
46 8B 0A C4 83 00 5C 97 5E 9A 50 F2 46 8D 16 86 -- 089710
50 FF 7C 86 8D 16 00 6A 05 89 85 E0 3E C5 2E 0A -- 089720
2E 08 C4 83 00 14 F5 9B 9A 35 FF 85 DC 3E C5 2E -- 089730
8D 9A 02 C4 83 00 14 FA 45 9A 35 FF 85 DC 3E C5 -- 089740
C5 2E 00 00 04 C8 57 56 CB 5E 5F C9 9B 00 54 85 -- 089750
75 01 0C 7E 83 00 E0 E9 03 75 00 3D 83 85 E0 3E -- 089760
FE 46 88 05 8B 85 D8 3E C5 2E 00 54 85 27 9A 05 -- 089770
6E 6A 05 6A 01 6A 50 FE 46 8D 16 50 FC 46 8D 16 -- 089780
C5 2E 2C 74 00 0A 7E 83 0E C4 83 00 64 40 D0 9A -- 089790
6A 50 FC 46 8D 16 11 75 00 03 3D 05 8B 85 E4 3E -- 0897A0
50 FC 46 8D 16 20 EB 06 C4 83 00 34 EF B7 9A 00 -- 0897B0
8B 85 E4 3E C5 2E 11 EB 04 C4 83 00 34 F0 54 9A -- 0897C0
00 54 83 B7 9A 00 5C 28 00 9A 05 74 00 03 3D 05 -- 0897D0
00 03 3D 05 8B 85 E4 3E C5 2E 36 74 00 0A 7E 83 -- 0897E0
C4 83 00 2C 23 09 9A 00 6A 50 FC 46 8D 16 11 75 -- 0897F0
83 00 34 F0 DE 9A 50 FC 46 8D 16 12 EB 06 01 FE -- 089800
C5 2E 09 EB 00 54 84 97 9A 00 5C 28 00 9A 04 C4 -- 089810
03 3D 05 8B 85 E4 3E C5 2E 00 00 05 C7 85 E0 3E -- 089820
83 00 34 EF B7 9A 00 6A 50 FC 46 8D 16 0F 74 00 -- 089830
5E 5F C9 00 54 85 8D 9A 05 75 01 0C 7E 83 06 C4 -- 089840
03 6A 00 6A 50 FE 46 8D 16 00 00 02 C8 57 56 CB -- 089850

85 E0 3E C5 2E 0A C4 83 00 64 40 D0 9A 01 2F 68 -- 089860
03 6A 00 6A 50 FE 46 8D 16 7A 75 00 02 3D 05 8B -- 089870
50 FE 46 8D 16 0A C4 83 00 64 40 D0 9A 01 2D 68 -- 089880
2E 85 EA 36 FF 2E 85 EC 36 FF 2E 85 EE 36 FF 2E -- 089890
00 64 40 D0 9A 00 CA 68 07 6A 02 6A 85 E8 36 FF -- 0898A0
36 FF 2E 85 EE 36 FF 2E 50 FE 46 8D 16 12 C4 83 -- 0898B0
07 6A 02 6A 85 E8 36 FF 2E 85 EA 36 FF 2E 85 EC -- 0898C0
```

606

```
50 FE 46 8D 16 12 C4 83 00 64 40 D0 9A 00 C9 68 -- 0898D0
EB 0A C4 83 00 64 40 D0 9A 01 2D 68 03 6A 09 6A -- 0898E0
85 EC 36 FF 2E 85 EE 36 FF 2E 50 FE 46 8D 16 28 -- 0898F0
CA 68 07 6A 01 6A 85 E8 36 FF 2E 85 EA 36 FF 2E -- 089900
09 6A 50 FE 46 8D 16 12 C4 83 00 64 40 D0 9A 00 -- 089910
5E 5F C9 0A C4 83 00 64 40 D0 9A 01 2F 68 03 6A -- 089920
02 3D 05 8B 85 E0 3E C5 2E 00 00 02 C8 57 56 CB -- 089930
36 FF 2E 85 EE 36 FF 2E 50 FE 46 8D 16 52 75 00 -- 089940
07 6A 02 6A 85 E8 36 FF 2E 85 EA 36 FF 2E 85 EC -- 089950
50 FE 46 8D 16 12 C4 83 00 64 40 D0 9A 00 CA 68 -- 089960
2E 85 EA 36 FF 2E 85 EC 36 FF 2E 85 EE 36 FF 2E -- 089970
00 64 40 D0 9A 00 C9 68 07 6A 02 6A 85 E8 36 FF -- 089980
2E 85 EE 36 FF 2E 50 FE 46 8D 16 28 EB 12 C4 83 -- 089990
01 6A 85 E8 36 FF 2E 85 EA 36 FF 2E 85 EC 36 FF -- 0899A0
5E 5F C9 12 C4 83 00 64 40 D0 9A 00 CA 68 07 6A -- 0899B0
03 3D 05 8B 85 E4 3E C5 2E 00 00 22 C8 57 56 CB -- 0899C0
89 86 0C 3E C5 2E 05 8B 86 10 3E C5 2E 50 74 00 -- 0899D0
16 50 E0 46 8D 16 50 DE 46 8D 16 3E 7E C0 0B 05 -- 0899E0
00 64 40 D0 9A 02 CA 68 07 6A 01 6A 50 F0 46 8D -- 0899F0
6A 50 E0 46 8D 16 50 DE 46 8D 16 12 C4 83 01 FE -- 089A00
10 3E C5 2E 0C C4 83 00 64 40 D0 9A 01 F8 68 04 -- 089A10
2E 00 00 02 C8 57 56 CB 5E 5F C9 00 00 05 C7 86 -- 089A20
86 0C 3E C5 2E 34 74 00 03 3D 05 8B 85 E4 3E C5 -- 089A30
46 8D 16 22 7E C0 0B 05 89 86 10 3E C5 2E 05 8B -- 089A40
D0 9A 01 FA 68 03 6A 35 FF 86 10 3E C5 2E 50 FE -- 089A50
C9 00 00 05 C7 86 0C 3E C5 2E 0A C4 83 00 64 40 -- 089A60
00 6C 32 86 00 6C 32 88 00 6C 32 8A 00 CB 5E 5F -- 089A70
00 6C 32 74 00 6C 32 96 00 6C 32 8E 00 6C 32 8C -- 089A80
1E 79 67 CB 3F 50 62 4D D2 F1 A9 FC 00 6C 32 7A -- 089A90
00 3C 86 9E 00 6C 32 84 00 6C 32 80 40 4C A5 DC -- 089AA0
FE DA 86 C7 00 00 FE DC 86 C7 00 01 2A C8 57 56 -- 089AB0
78 36 FF 2E 12 7E 00 3D 83 92 72 3E C5 2E 00 00 -- 089AC0
FF 2E 04 C4 83 00 5C 97 1E 9A 92 76 36 FF 2E 92 -- 089AD0
04 C4 83 00 5C D3 78 9A 92 7A 36 FF 2E 92 7C 36 -- 089AE0
89 05 89 92 7E 3E C5 2E 99 05 8B 92 82 3E C5 2E -- 089AF0
89 92 86 3E C5 2E 99 05 8B 92 8A 3E C5 2E 02 55 -- 089B00
92 8E 3E C5 2E 05 8B 92 92 3E C5 2E 02 55 89 05 -- 089B10
05 89 92 96 3E C5 2E 05 8B 92 9A 3E C5 2E 05 89 -- 089B20
8B 92 7E 3E C5 2E 18 00 68 00 6A 18 00 68 00 6A -- 089B30
86 3E C5 2E 50 52 00 D2 83 00 01 05 02 55 8B 05 -- 089B40
DC 9A 50 52 00 D2 83 00 01 05 02 55 8B 05 8B 92 -- 089B50
52 FA E2 D2 D1 E0 D1 00 03 B9 08 C4 83 00 5C EE -- 089B60
52 00 D2 83 00 01 05 08 C4 83 00 5C EF 6E 9A 50 -- 089B70
D8 96 89 FE D6 86 89 08 C4 83 00 5C EE DC 9A 50 -- 089B80
C6 00 02 D8 46 C7 02 DA 46 C6 00 00 D6 46 C7 FE -- 089B90
2E DE 56 89 DC 46 89 00 D2 83 30 00 05 00 DB 46 -- 089BA0
FF 2E 92 A0 36 FF 2E 12 7E 00 3D 83 92 72 3E C5 -- 089BB0
46 8D 16 12 6A 04 C4 83 00 5C 97 1E 9A 92 9E 36 -- 089BC0
A4 36 FF 2E 92 7A 36 FF 2E 92 7C 36 FF 2E 50 D6 -- 089BD0
50 52 0C C4 83 00 5C 94 8D 9A 92 A2 36 FF 2E 92 -- 089BE0
D2 7E 83 0A C4 83 00 5C ED 6E 9A 50 C4 46 8D 16 -- 089BF0

00 3D 83 92 72 3E C5 2E 01 38 E9 03 75 00 01 FE -- 089C00
5C 97 1E 9A 92 A6 36 FF 2E 92 A8 36 FF 2E 27 7E -- 089C10
AA 36 FF 2E 92 AC 36 FF 2E D2 76 FF 04 C4 83 00 -- 089C20
36 FF 2E 50 00 01 B8 06 C4 83 00 5C 97 1E 9A 92 -- 089C30
A2 36 FF 2E 92 A4 36 FF 2E 92 7A 36 FF 2E 92 7C -- 089C40
3E C5 2E FE DA 86 89 0A C4 83 00 5C 94 FB 9A 92 -- 089C50
AE 36 FF 2E 92 B0 36 FF 2E 28 7E 00 3D 83 92 72 -- 089C60
36 FF 2E FE DA B6 FF 04 C4 83 00 5C 97 1E 9A 92 -- 089C70
```

```
2E  06  C4  83  00  5C  97  1E  9A  92  B2  36  FF  2E  92  B4  --  089C80
FF  2E  92  B8  36  FF  2E  12  7E  00  3D  83  92  72  3E  C5  --  089C90
46  8D  16  12  6A  04  C4  83  00  5C  97  1E  9A  92  B6  36  --  089CA0
A4  36  FF  2E  92  7A  36  FF  2E  92  7C  36  FF  2E  50  D6  --  089CB0
50  52  0C  C4  83  00  5C  94  8D  9A  92  A2  36  FF  2E  92  --  089CC0
D2  7E  83  0A  C4  83  00  5C  ED  6E  9A  50  C4  46  8D  16  --  089CD0
36  FF  2E  24  7E  00  3D  83  92  72  3E  C5  2E  47  74  00  --  089CE0
2E  04  C4  83  00  5C  97  1E  9A  92  BA  36  FF  2E  92  BC  --  089CF0
C4  83  00  5C  97  1E  9A  92  BE  36  FF  2E  92  C0  36  FF  --  089D00
64  28  52  9A  D2  76  FF  00  6A  00  6A  00  6A  00  6A  04  --  089D10
83  92  72  3E  C5  2E  03  6E  E9  FF  FF  B8  0A  C4  83  00  --  089D20
16  EB  92  C2  36  FF  2E  92  C4  36  FF  2E  2A  7E  00  3D  --  089D30
C8  36  FF  2E  12  7E  00  01  3D  05  8B  92  72  3E  C5  2E  --  089D40
46  8B  04  C4  83  00  5C  97  1E  9A  92  C6  36  FF  2E  92  --  089D50
C0  2B  02  55  89  05  89  92  CA  3E  C5  2E  C6  56  8B  C4  --  089D60
FE  DF  86  88  00  04  B8  E0  46  88  E4  2A  FE  DE  86  88  --  089D70
B8  E2  46  89  FE  E0  86  89  00  0F  B8  E1  46  88  E4  2A  --  089D80
86  88  00  08  B8  E4  46  88  E4  2A  FE  E2  86  88  00  01  --  089D90
88  E4  2A  FE  E4  86  88  C0  2B  E5  46  88  E4  2A  FE  E3  --  089DA0
3E  C5  2E  E7  46  88  E4  2A  FE  E5  86  88  C0  2B  E6  46  --  089DB0
FA  E2  D2  D1  E0  D1  00  01  B9  02  55  8B  05  8B  92  86  --  089DC0
FE  E8  96  89  FE  E6  86  89  FF  10  96  89  FF  0E  86  89  --  089DD0
02  55  8B  05  8B  92  7E  3E  C5  2E  EA  56  89  E8  46  89  --  089DE0
FE  EC  96  89  FE  EA  86  89  FF  14  96  89  FF  12  86  89  --  089DF0
DD  9B  92  CE  06  DD  2E  9B  EE  56  89  EC  46  89  01  FE  --  089E00
96  DD  9B  92  CE  06  DD  2E  9B  F0  5E  DD  9B  FE  EE  96  --  089E10
FE  9E  DD  9B  92  CE  06  DD  2E  9B  F8  5E  DD  9B  FE  F6  --  089E20
9A  EE  D9  9B  FF  06  9E  DD  9B  92  CE  06  DD  2E  9B  FE  --  089E30
FF  16  86  89  08  C4  83  00  5C  EE  2F  9A  00  5C  ED  99  --  089E40
5C  EE  2F  9A  00  5C  ED  99  9A  EE  D9  9B  FF  18  96  89  --  089E50
72  3E  C5  2E  FF  1C  96  89  FF  1A  86  89  08  C4  83  00  --  089E60
92  D6  36  FF  2E  92  D8  36  FF  2E  12  7E  00  3D  83  92  --  089E70
8D  16  50  FE  DA  86  8D  16  04  C4  83  00  5C  97  1E  9A  --  089E80
F8  25  9A  35  FF  02  75  FF  92  CA  3E  C5  2E  50  E0  46  --  089E90
72  3E  C5  2E  41  74  00  FE  DA  BE  83  0C  C4  83  00  54  --  089EA0
92  DA  36  FF  2E  92  DC  36  FF  2E  28  7E  00  3D  83  92  --  089EB0
E0  36  FF  2E  FE  DA  B6  FF  04  C4  83  00  5C  97  1E  9A  --  089EC0
00  6A  06  C4  83  00  5C  97  1E  9A  92  DE  36  FF  2E  92  --  089ED0
3E  C5  2E  FE  31  E9  FE  DA  B6  FF  00  6A  00  6A  00  6A  --  089EE0
E2  36  FF  2E  92  E4  36  FF  2E  12  7E  00  3D  83  92  72  --  089EF0
16  50  FE  DA  86  8D  16  04  C4  83  00  5C  97  1E  9A  92  --  089F00
9A  35  FF  02  75  FF  92  CA  3E  C5  2E  50  FE  DE  86  8D  --  089F10
C5  2E  2D  74  00  FE  DA  BE  83  0C  C4  83  00  54  F5  DA  --  089F20
36  FF  2E  92  E8  36  FF  2E  A6  7E  00  3D  83  92  72  3E  --  089F30
FF  2E  FE  DA  B6  FF  04  C4  83  00  5C  97  1E  9A  92  E6  --  089F40
92  96  3E  C5  2E  FF  7B  E9  92  EA  36  FF  2E  92  EC  36  --  089F50
3E  C5  2E  02  55  89  05  89  92  EE  3E  C5  2E  99  05  8B  --  089F60
2E  02  55  89  05  89  92  F2  3E  C5  2E  99  05  8B  92  8E  --  089F70
26  04  03  26  99  05  8B  92  96  3E  C5  2E  92  7E  36  C4  --  089F80
05  89  92  F6  3E  C5  2E  00  DA  83  00  01  2D  02  54  13  --  089F90

99  05  8B  92  8E  3E  C5  2E  92  86  36  C4  2E  02  55  89  --  089FA0
3E  C5  2E  00  DA  83  00  01  2D  02  54  13  26  04  03  26  --  089FB0
00  00  05  C7  92  FE  3E  C5  2E  02  55  89  05  89  92  FA  --  089FC0
2E  12  7E  00  3D  83  92  72  3E  C5  2E  00  00  02  45  C7  --  089FD0
C4  83  00  5C  97  1E  9A  93  02  36  FF  2E  93  04  36  FF  --  089FE0
E4  2A  05  8A  93  06  3E  C5  2E  50  FE  DA  86  8D  16  04  --  089FF0
83  FE  DC  86  89  06  C4  83  00  54  8B  FF  9A  50  01  FE  --  08A000
3E  C5  2E  3C  74  00  FE  DA  BE  83  07  7C  00  FE  DC  BE  --  08A010
2E  93  0C  36  FF  2E  FE  B6  E9  03  7F  00  3D  83  92  72  --  08A020
```

608

```
FE DC B6 FF 04 C4 83 00 5C 97 1E 9A 93 0A 36 FF -- 08A030
1E 9A 93 0E 36 FF 2E 93 10 36 FF 2E FE DA B6 FF -- 08A040
3D 83 92 72 3E C5 2E FE 87 E9 08 C4 83 00 5C 97 -- 08A050
97 1E 9A 93 12 36 FF 2E 93 14 36 FF 2E 12 7E 00 -- 08A060
C5 2E 00 01 05 C7 93 16 3E C5 2E 04 C4 83 00 5C -- 08A070
36 FF 2E 93 1C 36 FF 2E 12 7E 00 3D 83 92 72 3E -- 08A080
5E 5F C9 9B C0 2B 04 C4 83 00 5C 97 1E 9A 93 1A -- 08A090
C6 01 FD 46 C6 00 FF 46 C6 00 00 26 C8 57 56 CB -- 08A0A0
2E 00 F5 46 C6 00 F7 46 C6 01 F9 46 C6 13 FB 46 -- 08A0B0
FF 2E 93 20 36 FF 2E 12 7E 00 3D 83 92 72 3E C5 -- 08A0C0
92 EE 3E C5 2E 04 C4 83 00 5C 97 1E 9A 93 1E 36 -- 08A0D0
05 8B 92 F6 3E C5 2E 05 89 93 22 3E C5 2E 05 8B -- 08A0E0
C5 2E 05 8B 92 F2 3E C5 2E 05 89 93 26 3E C5 2E -- 08A0F0
96 3E C5 2E 05 89 93 2A 3E C5 2E 05 89 93 2E 3E -- 08A100
8B 05 8B 92 EE 3E C5 2E CA 8B D8 8B 99 05 8B 92 -- 08A110
89 FA E2 D2 D1 E0 D1 00 02 B9 D1 1B C3 2B 02 55 -- 08A120
2E 12 7E 00 3D 83 92 72 3E C5 2E E4 56 89 E2 46 -- 08A130
C4 83 00 5C 97 1E 9A 93 32 36 FF 2E 93 34 36 FF -- 08A140
3A 36 FF 2E 93 3C 36 FF 2E 0C 76 FF 0E 76 FF 04 -- 08A150
DA 83 00 01 2D 02 55 8B 05 8B 92 7E 3E C5 2E 93 -- 08A160
55 89 05 89 93 36 3E C5 2E D0 8B C0 2B 50 52 00 -- 08A170
8A 50 E4 2A F7 46 8A 50 E4 2A F5 46 8A 50 52 02 -- 08A180
9A 35 FF 02 75 FF 92 CA 3E C5 2E 50 E4 2A F9 46 -- 08A190
2E 4E 74 00 3D 83 0C 7E C5 1A C4 83 00 4C 78 7A -- 08A1A0
FF 2E 93 40 36 FF 2E 29 7E 00 3D 83 92 72 3E C5 -- 08A1B0
35 FF 0C 7E C5 04 C4 83 00 5C 97 1E 9A 93 3E 36 -- 08A1C0
83 00 5C 97 1E 9A 93 42 36 FF 2E 93 44 36 FF 2E -- 08A1D0
9A 35 FF 0C 7E C5 00 6A 00 6A 00 6A 00 6A 06 C4 -- 08A1E0
3E C5 2E 02 E2 E9 FF FF B8 0A C4 83 00 64 28 52 -- 08A1F0
FF 2E 93 48 36 FF 2E 12 7E 00 3D 83 92 72 01 FE -- 08A200
76 FF 0E 76 FF 04 C4 83 00 5C 97 1E 9A 93 46 36 -- 08A210
8B 99 05 8B 92 8E 3E C5 2E 50 E4 2A FF 46 8A 0C -- 08A220
8B 05 8B 92 F2 3E C5 2E 92 FE 36 C4 2E CA 8B D8 -- 08A230
2E 50 52 D1 1B C3 2B 02 54 13 26 04 03 26 02 55 -- 08A240
C4 83 00 4C 7D 9F 9A 35 FF 02 75 FF 93 3A 3E C5 -- 08A250
3D 83 92 72 3E C5 2E 31 74 00 3D 83 0C 7E C5 0E -- 08A260
93 4A 36 FF 2E 93 4C 36 FF 2E FF 6E E9 03 7F 00 -- 08A270
36 FF 2E 35 FF 0C 7E C5 04 C4 83 00 5C 97 1E 9A -- 08A280
C7 00 00 EA 46 C7 FF 42 E9 93 4E 36 FF 2E 93 50 -- 08A290
46 89 02 55 8B 05 8B 92 F2 3E C5 2E 00 00 E8 46 -- 08A2A0
3B E0 56 8B DE 46 8B 92 FA 3E C5 2E E0 56 89 DE -- 08A2B0
01 35 E9 03 76 05 3B 01 3C E9 03 7E 0C 7C 02 55 -- 08A2C0
72 3E C5 2E E8 46 FF 00 B0 E9 03 74 00 EA 7E 83 -- 08A2D0
54 36 FF 2E 12 75 01 E8 7E 83 2D 7E 00 3D 83 92 -- 08A2E0
76 FF 04 C4 83 00 5C 97 1E 9A 93 52 36 FF 2E 93 -- 08A2F0
00 5C 97 1E 9A 93 56 36 FF 2E 93 58 36 FF 2E E8 -- 08A300
16 50 E4 2A FD 46 8A 0C 76 FF 0E 76 FF 06 C4 83 -- 08A310
8D 16 50 EA 46 8D 16 50 EC 46 8D 16 50 DA 46 8D -- 08A320
82 A0 9A 35 FF 02 75 FF 93 3A 3E C5 2E 50 F0 46 -- 08A330

3E C5 2E 3C 74 00 3D 83 0C 7E C5 1A C4 83 00 4C -- 08A340
2E 93 5C 36 FF 2E FE 8A E9 03 7F 00 3D 83 92 72 -- 08A350
C5 E8 76 FF 04 C4 83 00 5C 97 1E 9A 93 5A 36 FF -- 08A360
1E 9A 93 5E 36 FF 2E 93 60 36 FF 2E 35 FF 0C 7E -- 08A370
FF 0E 76 FF EA 4E FF FE 5B E9 08 C4 83 00 5C 97 -- 08A380
93 22 36 FF 2E 93 24 36 FF 2E 00 6A 00 6A 0C 76 -- 08A390
8B F0 46 03 05 03 E2 46 8B 02 EC 46 83 EC 7E C5 -- 08A3A0
5C A2 9A 0A 76 FF 50 E4 2A FB 46 8A 50 52 F2 56 -- 08A3B0
3E C5 2E 1F 74 00 3D 83 0C 7E C5 14 C4 83 00 54 -- 08A3C0
2E 35 FF 0C 7E C5 FE 0A E9 03 7F 00 3D 83 92 72 -- 08A3D0
```

```
2A  3E  C5  2E  FD  F0  E9  93  62  36  FF  2E  93  64  36  FF  --  08A3E0
56  83  01  DE  46  83  05  FF  93  2E  3E  C5  2E  05  FF  93  --  08A3F0
7E  00  3D  83  92  72  3E  C5  2E  FE  AF  E9  00  E0  01  FE  --  08A400
00  5C  97  1E  9A  93  66  36  FF  2E  93  68  36  FF  2E  12  --  08A410
75  FF  93  3A  3E  C5  2E  0C  76  FF  0E  76  FF  04  C4  83  --  08A420
3D  83  0C  7E  C5  08  C4  83  00  4C  8B  5B  9A  35  FF  02  --  08A430
FD  96  E9  03  7F  00  3D  83  92  72  3E  C5  2E  31  74  00  --  08A440
83  00  5C  97  1E  9A  93  6A  36  FF  2E  93  6C  36  FF  2E  --  08A450
6E  36  FF  2E  93  70  36  FF  2E  35  FF  0C  7E  C5  04  C4  --  08A460
FF  2E  12  7E  00  3D  83  92  72  3E  C5  2E  FD  6A  E9  93  --  08A470
04  C4  83  00  5C  97  1E  9A  93  72  36  FF  2E  93  74  36  --  08A480
7C  36  FF  2E  45  75  00  01  3D  05  8B  93  76  3E  C5  2E  --  08A490
8D  16  04  C4  83  00  5C  97  1E  9A  93  7A  36  FF  2E  93  --  08A4A0
81  AC  9A  93  7E  36  FF  2E  93  80  36  FF  2E  50  E6  46  --  08A4B0
2E  12  7E  00  3D  83  92  72  3E  C5  2E  08  C4  83  00  5C  --  08A4C0
C4  83  00  5C  97  1E  9A  93  82  36  FF  2E  93  84  36  FF  --  08A4D0
72  3E  C5  2E  EC  8B  55  57  56  CB  5E  5F  C9  C0  2B  04  --  08A4E0
93  86  36  FF  2E  93  88  36  FF  2E  12  7E  00  3D  83  92  --  08A4F0
C5  2E  0C  56  8B  0A  46  8B  04  C4  83  00  5C  97  1E  9A  --  08A500
C5  2E  10  56  8B  0E  46  8B  02  55  89  05  89  92  EE  3E  --  08A510
C5  2E  14  56  8B  12  46  8B  02  55  89  05  89  92  F2  3E  --  08A520
C5  2E  18  56  8B  16  46  8B  02  55  89  05  89  92  F6  3E  --  08A530
C5  2E  1C  56  8B  1A  46  8B  02  55  89  05  89  92  FA  3E  --  08A540
00  3D  83  92  72  3E  C5  2E  02  55  89  05  89  92  FE  3E  --  08A550
5C  97  1E  9A  93  8A  36  FF  2E  93  8C  36  FF  2E  12  7E  --  08A560
8A  93  8E  3E  C5  2E  1E  76  FF  20  76  FF  04  C4  83  00  --  08A570
83  1E  7E  C5  06  C4  83  00  54  8B  FF  9A  50  E4  2A  05  --  08A580
76  FF  18  7E  00  3D  83  92  72  3E  C5  2E  3D  74  00  3D  --  08A590
1E  9A  93  92  36  FF  2E  93  94  36  FF  2E  1E  76  FF  2E  --  08A5A0
76  FF  00  6A  00  6A  00  6A  00  6A  08  C4  83  00  5C  97  --  08A5B0
EB  FF  FF  B8  0C  C4  83  00  64  28  52  9A  1E  76  FF  20  --  08A5C0
93  98  36  FF  2E  12  7E  00  3D  83  92  72  3E  C5  2E  1E  --  08A5D0
C9  C0  2B  04  C4  83  00  5C  97  1E  9A  93  96  36  FF  2E  --  08A5E0
3D  83  92  72  3E  C5  2E  00  00  28  C8  57  56  CB  5E  5F  --  08A5F0
9A  93  9A  36  FF  2E  93  9C  36  FF  2E  12  7E  00  01  FE  --  08A600
5C  E0  79  9A  50  D8  46  8D  16  04  C4  83  00  5C  97  1E  --  08A610
89  05  89  92  EE  3E  C5  2E  99  D8  46  8B  04  C4  83  00  --  08A620
02  55  89  05  89  92  F2  3E  C5  2E  99  DA  46  8B  02  55  --  08A630
3E  C5  2E  04  C4  83  00  5C  E0  79  9A  50  D8  46  8D  16  --  08A640
73  05  3B  23  7F  06  7C  02  55  3B  99  D8  46  8B  92  EE  --  08A650
92  F6  3E  C5  2E  02  55  8B  05  8B  92  EE  3E  C5  2E  1F  --  08A660
09  EB  92  EE  3E  C5  2E  99  D8  46  8B  02  55  89  05  89  --  08A670
C5  2E  02  55  89  05  89  92  F6  3E  C5  2E  99  D8  46  8B  --  08A680
05  3B  23  7F  06  7C  02  55  3B  99  DA  46  8B  92  F2  3E  --  08A690
FA  3E  C5  2E  02  55  8B  05  8B  92  F2  3E  C5  2E  1F  73  --  08A6A0
EB  92  F2  3E  C5  2E  99  DA  46  8B  02  55  89  05  89  92  --  08A6B0
2E  02  55  89  05  89  92  FA  3E  C5  2E  99  DA  46  8B  09  --  08A6C0
75  FF  92  FA  3E  C5  2E  3A  7E  00  3D  83  92  72  3E  C5  --  08A6D0

3E  C5  2E  35  FF  02  75  FF  92  F2  3E  C5  2E  35  FF  02  --  08A6E0
FF  02  75  FF  92  EE  3E  C5  2E  35  FF  02  75  FF  92  F6  --  08A6F0
00  5C  97  1E  9A  93  9E  36  FF  2E  93  A0  36  FF  2E  35  --  08A700
C6  C8  00  24  31  54  00  CB  5E  5F  C9  C0  2B  14  C4  83  --  08A710
CD  DA  00  3C  AE  D6  00  3C  CD  DE  00  3C  CD  C4  00  3C  --  08A720
CD  FC  00  3C  AE  DC  00  3C  CD  FA  00  3C  AE  D8  00  3C  --  08A730
C7  04  00  3C  86  A2  00  3C  C6  E0  00  3C  AE  DA  00  3C  --  08A740
C7  92  00  3C  C7  61  00  3C  C7  48  00  3C  C7  24  00  3C  --  08A750
C8  3F  00  3C  C8  2C  00  3C  C7  F9  00  3C  C7  D5  00  3C  --  08A760
C8  52  3F  F0  00  00  00  00  00  00  00  3C  CE  32  00  3C  --  08A770
C8  D4  00  3C  C8  BB  00  3C  C8  85  00  3C  C8  6C  00  3C  --  08A780
```

610

```
CD  F2  00  3C  CD  EE  00  3C  CD  EA  00  3C  C8  ED  00  3C  --  08A790
CD  C0  00  3C  C9  26  00  3C  CD  E6  00  3C  CD  F6  00  3C  --  08A7A0
CD  BC  00  3C  C9  D6  00  3C  C9  A0  00  3C  C9  87  00  3C  --  08A7B0
CE  00  00  3C  CD  FE  00  3C  CA  34  00  3C  CA  27  00  3C  --  08A7C0
CD  E2  00  3C  CA  4A  00  3C  CE  02  00  3C  CE  04  00  3C  --  08A7D0
CA  AD  00  3C  CA  77  00  3C  CA  60  00  3C  CD  D6  00  3C  --  08A7E0
CB  30  00  3C  CB  12  00  3C  CA  DB  00  3C  CA  C4  00  3C  --  08A7F0
00  3C  CB  8B  00  3C  CB  54  00  3C  CB  3D  00  3C  01  FE  --  08A800
00  3C  CC  27  00  3C  CB  F1  00  3C  CB  DA  00  3C  CB  C4  --  08A810
00  3C  CC  6F  00  3C  CC  6C  00  3C  CC  34  00  24  31  4C  --  08A820
00  3C  CC  F6  00  3C  CD  C2  00  3C  CC  93  00  3C  CC  75  --  08A830
02  C8  57  56  00  3C  CD  7B  00  3C  CD  5E  00  3C  CD  3D  --  08A840
EB  FF  FF  B8  05  74  00  3D  83  A0  24  3E  C5  2E  00  00  --  08A850
2E  ED  75  00  FE  7E  83  FE  46  89  00  54  9F  4C  9A  40  --  08A860
9A  05  89  A0  28  3E  C5  2E  E4  2A  05  8A  A0  2C  3E  C5  --  08A870
3E  C5  2E  00  00  05  C7  A0  30  3E  C5  2E  00  54  53  94  --  08A880
2B  00  00  05  C7  A0  38  3E  C5  2E  00  00  05  C7  A0  34  --  08A890
C6  00  EE  46  C6  00  00  CA  C8  57  56  CB  5E  5F  C9  C0  --  08A8A0
00  00  D8  46  C7  00  E1  46  C6  00  E3  46  C6  01  EC  46  --  08A8B0
5E  D9  9B  E8  D9  9B  00  02  C2  46  C7  00  00  DA  46  C7  --  08A8C0
2E  00  00  B2  46  C7  00  01  05  C7  A0  3C  3E  C5  2E  B6  --  08A8D0
46  C7  00  54  9F  4C  9A  05  75  00  3D  83  A0  40  3E  C5  --  08A8E0
03  2E  E6  D1  B4  76  8B  30  7D  04  B4  7E  83  00  00  B4  --  08A8F0
26  05  8B  A0  44  3E  C5  2E  A0  4A  06  8E  2E  A0  48  36  --  08A900
46  8B  1F  16  FD  03  B2  46  FF  B2  7E  8B  10  74  04  23  --  08A910
9A  50  FF  44  86  8D  16  CA  EB  B4  46  FF  AC  45  88  B4  --  08A920
2E  00  7F  25  E4  2A  8A  46  8A  04  C4  83  00  5C  D0  B3  --  08A930
A0  50  36  FF  2E  A0  52  36  FF  2E  05  89  A0  4C  3E  C5  --  08A940
08  05  C4  8B  16  50  FF  44  86  8D  16  64  6A  64  EC  83  --  08A950
83  00  54  11  C5  9A  0A  C4  83  00  5C  ED  6E  9A  50  00  --  08A960
52  36  FF  2E  23  74  00  3D  83  A0  54  3E  C5  2E  68  C4  --  08A970
86  89  04  C4  83  00  34  F9  24  9A  A0  50  36  FF  2E  A0  --  08A980
9A  04  A3  E9  FF  FF  B8  06  75  03  FF  42  BE  83  FF  42  --  08A990
2E  9A  A0  50  36  FF  2E  A0  52  36  FF  2E  00  34  D9  7E  --  08A9A0
A0  50  3E  C5  2E  00  34  DA  22  9A  04  C4  83  00  5C  29  --  08A9B0
A0  60  3E  C5  2E  1D  D9  9B  A0  58  3E  C5  2E  05  DF  9B  --  08A9C0
A0  70  3E  C5  2E  1D  D9  9B  A0  5C  3E  C5  2E  05  DF  9B  --  08A9D0
3E  C5  2E  FF  38  96  89  FF  36  86  89  02  55  8B  05  8B  --  08A9E0
2E  A0  68  36  C4  2E  FF  3A  9E  DD  9B  05  DD  9B  A0  6C  --  08A9F0
B6  DC  9B  0C  DC  26  9B  05  D9  9B  A0  64  3E  C5  01  FE  --  08AA00
A0  80  3E  C5  2E  F8  5E  D9  9B  FF  36  86  DA  9B  FF  3A  --  08AA10
3E  C5  2E  FF  38  96  89  FF  36  86  89  02  55  8B  05  8B  --  08AA20
2E  A0  78  36  C4  2E  FF  3A  9E  DD  9B  05  DD  9B  A0  7C  --  08AA30
FF  3A  B6  DC  9B  0C  DC  26  9B  05  D9  9B  A0  74  3E  C5  --  08AA40
05  8B  A0  84  3E  C5  2E  F4  5E  D9  9B  FF  36  86  DA  9B  --  08AA50
FF  02  6A  00  6A  FF  40  96  89  FF  3E  86  89  02  55  8B  --  08AA60
FF  3E  86  03  08  C4  83  00  5C  EE  D0  9A  35  FF  02  75  --  08AA70
8B  A0  84  3E  C5  2E  FE  56  89  FC  46  89  FF  40  96  13  --  08AA80
EA  56  89  E8  46  89  00  DA  83  00  01  2D  02  55  8B  05  --  08AA90
EE  2F  9A  00  5C  ED  99  9A  C2  66  DE  9B  F4  46  D9  9B  --  08AAA0
79  00  CA  7E  83  CA  56  89  C8  46  89  08  C4  83  00  5C  --  08AAB0
9B  F4  46  D9  9B  00  00  CA  46  C7  00  00  C8  46  C7  0A  --  08AAC0
08  C4  83  00  5C  EE  2F  9A  00  5C  ED  99  9A  C2  46  DE  --  08AAD0
02  55  8B  05  8B  A0  88  3E  C5  2E  C6  56  89  C4  46  89  --  08AAE0
C4  46  3B  1B  7F  07  7C  C6  56  3B  00  DA  83  00  01  2D  --  08AAF0
83  00  01  2D  02  55  8B  05  8B  A0  88  3E  C5  2E  16  73  --  08AB00
C2  66  DE  9B  F8  46  D9  9B  C6  56  89  C4  46  89  00  DA  --  08AB10
D0  46  89  08  C4  83  00  5C  EE  2F  9A  00  5C  ED  99  9A  --  08AB20
46  C7  00  00  D0  46  C7  0A  79  00  D2  7E  83  D2  56  89  --  08AB30
```

611

```
00 5C ED 99 9A C2 46 DE 9B F8 46 D9 9B 00 00 D2 -- 08AB40
C5 2E CE 56 89 CC 46 89 08 C4 83 00 5C EE 2F 9A -- 08AB50
56 3B 00 DA 83 00 01 2D 02 55 8B 05 8B A0 84 3E -- 08AB60
8B A0 84 3E C5 2E 16 73 CC 46 3B 1B 7F 07 7C CE -- 08AB70
CE 56 89 CC 46 89 00 DA 83 00 01 2D 02 55 8B 05 -- 08AB80
83 00 01 05 D2 56 1B D0 46 2B CE 56 8B CC 46 8B -- 08AB90
CA 56 1B C8 46 2B C6 56 8B C4 46 8B 50 52 00 D2 -- 08ABA0
08 C4 83 00 5C EE DC 9A 50 52 00 D2 83 00 01 05 -- 08ABB0
00 B4 46 C7 BE 46 89 A0 8C 3E F7 2E 99 C0 46 89 -- 08ABC0
B4 7E 8B 18 7D 05 3B B4 46 8B A0 28 3E C5 2E 00 -- 08ABD0
00 00 05 C7 A0 90 1E 8E 2E A0 8E 3E 03 2E E7 D1 -- 08ABE0
FF 50 E4 46 8D 16 50 F2 46 8D 16 DC EB B4 46 FF -- 08ABF0
00 02 B8 D8 76 FF DA 76 FF E8 76 FF EA 76 01 FE -- 08AC00
8D 16 50 E4 2A ED 46 88 C0 2B 50 E4 2A EC 46 88 -- 08AC10
2A EF 46 88 00 01 B8 50 E4 2A EE 46 8A 50 B6 46 -- 08AC20
2C 6F 1C 9A 35 FF 02 75 FF A0 92 3E C5 2E 50 E4 -- 08AC30
D0 F8 9A F2 76 FF 0E 74 00 F2 7E 83 20 C4 83 00 -- 08AC40
E1 46 8A 50 F2 46 8D 16 01 EE E9 02 C4 83 00 2C -- 08AC50
FF C8 76 FF CA 76 FF 50 E4 2A E3 46 8A 50 E4 2A -- 08AC60
F2 7E 83 10 C4 83 00 2C 79 D7 9A E4 76 FF E6 76 -- 08AC70
56 3B CA 56 8B C8 46 8B 00 00 F0 46 C7 C7 75 00 -- 08AC80
00 C1 E9 03 76 C4 46 3B 00 C9 E9 03 7E 0D 7C C6 -- 08AC90
50 DC 46 8D 16 50 F2 46 8D 16 35 75 00 F0 7E 83 -- 08ACA0
FF 50 A8 46 8D 16 50 F0 46 8D 16 50 BA 46 8D 16 -- 08ACB0
F2 7E 83 18 C4 83 00 2C 96 CF 9A E4 76 FF E6 76 -- 08ACC0
46 FF B2 7E 8B 00 00 B2 46 C7 FF 74 E9 03 74 00 -- 08ACD0
4E FF B4 46 89 05 8B BC 5E 8E BA 7E 03 E7 D1 B2 -- 08ACE0
05 3B B0 46 8B A0 28 3E C5 2E 00 00 B0 46 C7 F0 -- 08ACF0
46 8B D6 56 89 D4 46 89 D2 56 8B D0 46 8B 54 7D -- 08AD00
2B 77 CC 46 3B 30 7F 07 7C CE 56 3B D6 56 8B D4 -- 08AD10
E4 2A 05 8A AA 5E 8E A8 7E 03 B4 7E 03 D4 7E 8B -- 08AD20
01 A0 90 1E 8E 2E A0 8E 3E 03 2E E7 D1 B0 7E 8B -- 08AD30
46 01 FC 46 8B C3 EB 00 D6 56 83 01 D4 46 83 05 -- 08AD40
27 E9 00 CA 56 83 01 C8 46 83 A0 EB B0 46 FF B4 -- 08AD50
05 3B B0 46 8B A0 28 3E C5 2E 00 00 B0 46 C7 FF -- 08AD60
90 1E 8E 2E A0 8E 3E 03 2E E7 D1 B0 7E 8B 2F 7D -- 08AD70
A0 90 06 8E 2E A0 8E 36 03 2E E6 D1 B0 76 8B A0 -- 08AD80
EB B0 46 FF 05 89 C0 7E F7 99 04 03 26 BE 46 8B -- 08AD90
05 3B B4 46 8B A0 28 3E C5 2E 00 00 B4 46 C7 C5 -- 08ADA0
90 1E 8E 2E A0 8E 3E 03 2E E7 D1 B4 7E 8B 55 7D -- 08ADB0
E4 2A AC 45 8A F8 03 1F 16 FD 8B E6 D1 35 8B A0 -- 08ADC0
03 A0 9C 1E 8E 2E A0 9A 3E 03 2E 09 E7 C1 F8 8B -- 08ADD0
8B 02 C4 83 00 5C ED A7 9A 50 00 FF 25 05 8B FE -- 08ADE0
9B A0 98 1E 8E 2E A0 96 3E 03 2E 02 E7 C1 B4 7E -- 08ADF0
00 54 55 78 9A 1A 6A 9F EB B4 46 FF 1D D9 01 FE -- 08AE00
54 99 B2 9A 00 01 05 C7 A0 30 3E C5 2E 02 C4 83 -- 08AE10

FF 50 F2 46 8D 16 00 01 05 C7 A0 34 3E C5 2E 00 -- 08AE20
F2 7E 83 08 C4 83 00 2C A0 F7 9A E4 76 FF E6 76 -- 08AE30
55 57 56 CB 5E 5F C9 9B C0 2B FE 06 E9 03 74 00 -- 08AE40
5F C9 C0 2B 00 54 56 D5 9A 00 54 9F F3 9A EC 8B -- 08AE50
00 3D 83 A0 3C 3E C5 2E 00 00 08 C8 57 56 CB 5E -- 08AE60
FE 46 C7 00 00 FC 46 C7 03 68 E9 00 01 B8 06 75 -- 08AE70
36 03 2E E6 D1 FE 76 8B 30 7D 04 FE 7E 83 00 00 -- 08AE80
23 26 05 8B A0 44 3E C5 2E A0 4A 06 8E 2E A0 48 -- 08AE90
FE 46 8B 1F 16 FD 03 FC 46 FF FC 7E 8B 10 74 04 -- 08AEA0
00 3D 83 A0 9E 3E C5 2E CA EB FE 46 FF F8 45 88 -- 08AEB0
3B FE 46 8B A0 28 3E C5 2E 00 00 FE 46 C7 69 75 -- 08AEC0
A0 8E 3E 03 2E E7 D1 FE 7E 8B 02 FE E9 03 7C 05 -- 08AED0
8A F8 03 1F 16 FD 8B E6 D1 35 8B A0 90 1E 8E 2E -- 08AEE0
```

```
8E 2E A0 A2 3E 03 2E 09 E7 C1 F8 8B E4 2A F8 45 -- 08AEF0
00 5C ED A7 9A 50 00 FF 25 05 8B FE 03 A0 A4 1E -- 08AF00
8E 2E A0 96 3E 03 2E 02 E7 C1 FE 7E 8B 02 C4 83 -- 08AF10
A0 A6 3E C5 2E 9C EB FE 46 FF 1D D9 9B A0 98 1E -- 08AF20
83 A0 AA 3E C5 2E 00 FE E9 03 74 00 01 3D 05 8B -- 08AF30
E6 D1 35 8B A0 4C 3E C5 2E 00 F1 E9 03 74 00 3D -- 08AF40
8B A0 AE 3E C5 2E A0 B4 06 8E 2E A0 B2 36 03 2E -- 08AF50
A0 28 3E C5 2E 00 00 FE 46 C7 69 74 04 3B 26 05 -- 08AF60
2E E7 D1 FE 7E 8B 02 5A E9 03 7C 05 3B FE 46 8B -- 08AF70
16 FD 8B E6 D1 35 8B A0 90 1E 8E 2E A0 8E 3E 03 -- 08AF80
3E 03 2E 09 E7 C1 F8 8B E4 2A F8 45 8A F8 03 1F -- 08AF90
9A 50 00 FF 25 05 8B FE 03 A0 A4 1E 8E 2E A0 A2 -- 08AFA0
3E 03 2E 02 E7 C1 FE 7E 8B 02 C4 83 00 5C ED A7 -- 08AFB0
C7 9C EB FE 46 FF 1D D9 9B A0 98 1E 8E 2E A0 96 -- 08AFC0
03 7C 05 3B FE 46 8B A0 28 3E C5 2E 00 00 FE 46 -- 08AFD0
1E 8E 2E A0 8E 3E 03 2E E7 D1 FE 7E 8B 01 F1 E9 -- 08AFE0
2A F8 45 8A F8 03 1F 16 FD 8B E6 D1 35 8B A0 90 -- 08AFF0
1E 8E 2E A0 B6 3E 03 2E 09 E7 C1 F8 8B E4 01 FE -- 08B000
83 00 5C ED A7 9A 50 00 FF 25 05 8B FE 03 A0 B8 -- 08B010
1E 8E 2E A0 96 3E 03 2E 02 E7 C1 FE 7E 8B 02 C4 -- 08B020
83 A0 AA 3E C5 2E 9C EB FE 46 FF 1D D9 9B A0 98 -- 08B030
E7 D1 3D 8B A0 4C 3E C5 2E 00 83 E9 03 74 00 3D -- 08B040
75 00 02 3D 05 8B A0 B4 1E 8E 2E A0 B2 3E 03 2E -- 08B050
05 3B FE 46 8B A0 28 3E C5 2E 00 00 FE 46 C7 69 -- 08B060
2E A0 8E 3E 03 2E E7 D1 FE 7E 8B 01 61 E9 03 7C -- 08B070
45 8A F8 03 1F 16 FD 8B E6 D1 35 8B A0 90 1E 8E -- 08B080
1E 8E 2E A0 A2 3E 03 2E 09 E7 C1 F8 8B E4 2A F8 -- 08B090
83 00 5C ED A7 9A 50 00 FF 25 05 8B FE 03 A0 A4 -- 08B0A0
1E 8E 2E A0 96 3E 03 2E 02 E7 C1 FE 7E 8B 02 C4 -- 08B0B0
8B A0 4C 3E C5 2E 9C EB FE 46 FF 1D D9 9B A0 98 -- 08B0C0
3D 05 8B A0 BC 1E 8E 2E A0 BA 3E 03 2E E7 D1 3D -- 08B0D0
46 8B A0 28 3E C5 2E 00 00 FE 46 C7 69 75 FF FF -- 08B0E0
3E 03 2E E7 D1 FE 7E 8B 00 DE E9 03 7C 05 3B FE -- 08B0F0
03 1F 16 FD 8B E6 D1 35 8B A0 90 1E 8E 2E A0 8E -- 08B100
A0 B6 3E 03 2E 09 E7 C1 F8 8B E4 2A F8 45 8A F8 -- 08B110
ED A7 9A 50 00 FF 25 05 8B FE 03 A0 B8 1E 8E 2E -- 08B120
A0 96 3E 03 2E 02 E7 C1 FE 7E 8B 02 C4 83 00 5C -- 08B130
FE 46 C7 9C EB FE 46 FF 1D D9 9B A0 98 1E 8E 2E -- 08B140
7E 8B 78 7D 05 3B FE 46 8B A0 28 3E C5 2E 00 00 -- 08B150
D1 05 8B A0 90 1E 8E 2E A0 8E 3E 03 2E E7 D1 FE -- 08B160
BA 1E 03 2E E3 D1 1F 8B A0 4C 1E C5 2E C8 8B E0 -- 08B170
A0 BE 36 03 2E 02 E6 C1 37 8B A0 BC 1E 8E 2E A0 -- 08B180
2A F8 45 8A FE 7E 03 1F 16 FD 8B A0 C0 06 8E 2E -- 08B190
8B F9 03 02 5C 8E 26 3C 03 26 09 E7 C1 F8 8B E4 -- 08B1A0
FE 7E 8B 02 C4 83 00 5C ED A7 9A 50 00 FF 25 05 -- 08B1B0

1D D9 9B A0 98 1E 8E 2E A0 96 3E 03 2E 02 E7 C1 -- 08B1C0
02 C4 83 00 54 55 78 9A 1B 6A FF 7C E9 FE 46 FF -- 08B1D0
24 3E C5 2E EC 8B 55 57 56 CB 5E 5F C9 9B C0 2B -- 08B1E0
A0 38 36 FF 2E A0 3A 36 FF 2E 46 74 00 3D 83 A0 -- 08B1F0
54 9E 1E 9A A0 50 36 FF 2E A0 52 36 FF 2E 01 FE -- 08B200
C5 2E 20 75 00 3D 83 A0 38 3E C5 2E 08 C4 83 00 -- 08B210
C5 2E 1D D9 9B A0 58 3E C5 2E 05 DF 9B A0 50 3E -- 08B220
C0 2B 1D D9 9B A0 5C 3E C5 2E 05 DF 9B A0 60 3E -- 08B230
A0 38 3E C5 2E 00 00 02 C8 57 56 CB 5E 5F C9 9B -- 08B240
2E 6C 74 00 3D 83 A0 30 3E C5 2E FE 46 89 05 8B -- 08B250
FF 2E A0 52 36 FF 2E A0 38 36 FF 2E A0 3A 36 FF -- 08B260
00 54 5A E1 9A 08 C4 83 00 54 9E 1E 9A A0 50 36 -- 08B270
0A 75 00 FE 7E 83 10 74 00 3D 83 A0 34 3E C5 2E -- 08B280
8B A0 38 3E C5 2E 02 C4 83 00 54 58 57 9A 33 6A -- 08B290
```

```
AO  50  3E  C5  2E  22  EB  00  01  B8  05  75  00  01  3D  05  --  08B2A0
AO  60  3E  C5  2E  1D  D9  9B  AO  58  3E  C5  2E  05  DF  9B  --  08B2B0
5F  C9  9B  CO  2B  1D  D9  9B  AO  5C  3E  C5  2E  05  DF  9B  --  08B2C0
9A  00  00  05  C7  0E  7E  C5  00  00  60  C8  57  56  CB  5E  --  08B2D0
9B  F8  5E  D9  9B  10  45  D9  9B  0A  7E  C5  00  34  D9  7E  --  08B2E0
F8  46  8D  16  50  F0  46  8D  16  FC  5E  D9  9B  14  45  D9  --  08B2F0
DC  2E  9B  F0  46  D9  9B  08  C4  83  00  34  EF  50  9A  50  --  08B300
08  C4  83  00  5C  ED  F9  9A  00  5C  ED  99  9A  AO  C2  06  --  08B310
9A  AO  C2  06  DC  2E  9B  F4  46  D9  9B  05  89  0A  7E  C5  --  08B320
89  0A  7E  C5  08  C4  83  00  5C  ED  F9  9A  00  5C  ED  99  --  08B330
9B  04  C4  83  00  34  ED  BA  9A  50  E0  46  8D  16  02  45  --  08B340
46  DC  9B  E0  46  D9  9B  D0  5E  DD  9B  AO  CA  06  DF  2E  --  08B350
9A  D8  5E  DC  9B  05  DF  9B  0A  7E  C5  D8  5E  DD  9B  D0  --  08B360
CO  5E  DD  9B  AO  CA  06  DF  2E  9B  77  72  00  5C  ED  94  --  08B370
9B  0A  7E  C5  C8  5E  DD  9B  CO  66  DC  9B  E4  46  D9  9B  --  08B380
DF  2E  9B  50  77  00  5C  ED  94  9A  C8  5E  DC  9B  05  DF  --  08B390
9B  B0  46  DC  9B  E8  46  D9  9B  B0  5E  DD  9B  AO  CA  06  --  08B3A0
94  9A  B8  5E  DC  9B  02  45  DF  9B  0A  7E  C5  B8  5E  DD  --  08B3B0
9B  AO  5E  DD  9B  AO  CA  06  DF  2E  9B  28  72  00  5C  ED  --  08B3C0
DF  9B  0A  7E  C5  A8  5E  DD  9B  AO  66  DC  9B  EC  46  D9  --  08B3D0
0E  7E  C5  07  76  00  5C  ED  94  9A  A8  5E  DC  9B  02  45  --  08B3E0
CB  5E  5F  C9  9B  CO  2B  00  34  DA  22  9A  00  01  05  C7  --  08B3F0
00  3D  83  AO  40  3E  C5  2E  00  00  02  C8  57  56  01  FE  --  08B400
AO  D6  36  FF  2E  01  6A  FF  6A  12  6A  00  8E  E9  03  74  --  08B410
9A  AO  D0  36  FF  2E  AO  D2  36  FF  2E  AO  D4  36  FF  2E  --  08B420
FF  2E  AO  CE  36  FF  2E  50  52  0C  C4  83  00  5C  93  FD  --  08B430
AO  D8  3E  C5  2E  0A  C4  83  00  5C  ED  6E  9A  AO  CC  36  --  08B440
EB  02  C4  83  00  2C  D0  F8  9A  35  FF  0C  74  00  3D  83  --  08B450
AO  92  3E  C5  2E  02  55  8B  05  8B  AO  CC  3E  C5  2E  44  --  08B460
2E  AO  DE  36  FF  2E  50  FE  46  8D  16  02  55  89  05  89  --  08B470
83  0C  C4  83  00  54  F6  E3  9A  35  FF  52  AO  DC  36  FF  --  08B480
C7  AO  40  3E  C5  2E  BD  EB  FE  76  FF  05  74  00  FE  7E  --  08B490
C5  2E  EC  8B  55  57  56  CB  5E  5F  C9  CO  2B  00  01  05  --  08B4A0
36  FF  2E  AO  CE  36  FF  2E  1B  74  00  3D  83  AO  40  3E  --  08B4B0
C7  AO  40  3E  C5  2E  04  C4  83  00  5C  94  D5  9A  AO  CC  --  08B4C0
1E  34  00  6C  29  F4  00  CB  5E  5F  C9  CO  2B  00  00  05  --  08B4D0
1D  E4  00  6C  1E  2A  00  6C  1E  28  00  6C  1E  37  00  6C  --  08B4E0
1D  DA  00  6C  1E  38  00  6C  1D  E2  00  6C  29  F6  00  6C  --  08B4F0
1E  2C  00  3C  AE  54  00  6C  1E  00  00  6C  1F  20  00  6C  --  08B500
1E  4E  00  6C  1E  10  00  6C  1E  02  00  6C  1E  30  00  6C  --  08B510
1E  46  00  6C  1E  14  00  6C  1E  72  00  6C  1E  5E  00  6C  --  08B520
1E  66  00  6C  1E  6A  00  6C  1E  6E  00  6C  1E  56  00  6C  --  08B530
00  6C  2A  10  00  6C  1F  1C  00  6C  1D  E6  00  02  00  6C  --  08B540
00  24  57  BC  00  3C  6E  86  00  3C  91  14  00  24  3D  58  --  08B550

00  24  4D  5C  00  3C  AF  10  00  24  77  8E  00  3C  A5  4C  --  08B560
3F  E0  00  00  00  00  00  00  24  57  CO  00  24  55  BC  --  08B570
1D  FC  00  3C  86  F6  00  3C  86  A2  00  6C  1D  EE  00  03  --  08B580
AC  B8  3E  C5  2E  EC  8B  55  57  56  00  6C  1E  36  00  6C  --  08B590
00  05  C7  AC  BC  3E  C5  2E  00  9C  E9  03  74  00  3D  83  --  08B5A0
83  AC  CO  3E  C5  2E  00  01  05  C7  AC  B8  3E  C5  2E  00  --  08B5B0
03  05  AC  C4  06  8B  2E  AC  C6  36  FF  2E  21  74  00  3D  --  08B5C0
C7  AC  CO  3E  C5  2E  04  C4  83  00  64  15  E0  9A  50  00  --  08B5D0
9A  AC  C8  36  FF  2E  AC  CA  36  FF  2E  42  EB  00  00  05  --  08B5E0
FF  2E  AC  CE  36  FF  2E  57  56  04  C4  83  00  14  F4  F5  --  08B5F0
5F  00  8C  00  02  9A  00  9C  68  00  6A  AC  CC  36  01  FE  --  08B600
C7  00  01  05  C7  00  01  08  45  C7  AC  CC  3E  C5  2E  5E  --  08B610
AC  D2  36  FF  2E  57  56  00  04  12  45  C7  00  00  0A  45  --  08B620
5F  00  8C  00  02  9A  00  84  68  20  6A  AC  D0  36  FF  2E  --  08B630
00  00  0A  C8  57  56  CB  5E  5F  C9  00  54  A2  55  9A  5E  --  08B640
```

614

```
C5 2E 00 00 05 C7 04 74 00 3D 83 AC B8 3E C5 2E -- 08B650
75 00 3D 83 AC C0 3E C5 2E 00 00 05 C7 AC D4 3E -- 08B660
9A 50 00 03 05 AC D8 06 8B 2E AC DA 36 FF 2E 3E -- 08B670
FF 2E AC DE 36 FF 2E 57 56 04 C4 83 00 64 15 E0 -- 08B680
2E 5E 5F 00 8C 00 02 9A 00 84 68 20 6A AC DC 36 -- 08B690
B8 59 EB 00 54 A4 2A 9A 00 01 05 C7 AC C0 3E C5 -- 08B6A0
50 FA 46 8D 16 50 F6 46 8D 16 50 FE 46 89 00 03 -- 08B6B0
46 D9 9B AC E0 3E C5 2E 0A C4 83 00 34 FC 2D 9A -- 08B6C0
AC E4 3E C5 2E 13 75 00 5C ED 94 9A 1D D8 9B FA -- 08B6D0
D9 9B 1A 74 00 5C ED 94 9A 1D D8 9B F6 46 D9 9B -- 08B6E0
00 5C ED 99 9A FA 46 D9 9B 00 5C ED 99 9A F6 46 -- 08B6F0
55 57 56 CB 5E 5F C9 9B 10 C4 83 00 54 A7 6C 9A -- 08B700
C0 3E C5 2E 10 75 00 3D 83 AC B8 3E C5 2E EC 8B -- 08B710
BC 3E C5 2E 01 B1 E9 01 AF E9 03 74 00 3D 83 AC -- 08B720
2E 16 75 4D 3D 80 AC E8 3E C5 2E 00 01 05 C7 AC -- 08B730
FF 2E AC EE 36 FF 2E 00 02 12 45 C7 AC CC 3E C5 -- 08B740
2E 00 04 12 45 C7 AC CC 3E C5 2E 14 EB AC EC 36 -- 08B750
FF 2E AC D2 36 FF 2E AC F0 36 FF 2E AC F2 36 FF -- 08B760
AC F6 36 FF 2E 08 C4 83 00 5C 97 5E 9A AC D0 36 -- 08B770
05 AC D0 06 8B 2E AC D2 36 FF 2E AC F4 36 FF 2E -- 08B780
AD 00 3E C5 2E 08 C4 83 00 5C 97 5E 9A 50 00 16 -- 08B790
08 C4 83 00 64 53 E8 9A 00 5C ED 99 9A 05 D9 9B -- 08B7A0
ED 99 9A 05 D9 9B AC FC 3E C5 2E 00 5C ED 99 9A -- 08B7B0
2E 00 5C ED 99 9A 08 C4 83 00 64 53 E8 9A 00 5C -- 08B7C0
8B 2E AC D2 36 FF 2E AC F8 36 FF 2E AC FA 36 FF -- 08B7D0
2E 18 C4 83 00 5C 97 5E 9A 50 00 16 05 AC D0 06 -- 08B7E0
8B 2E AC D2 36 FF 2E AD 04 36 FF 2E AD 06 36 FF -- 08B7F0
C4 83 00 5C 97 5E 9A 50 00 2C 05 AC D0 06 01 FE -- 08B800
18 9A 00 5C ED 99 9A 05 D9 9B AD 10 3E C5 2E 08 -- 08B810
AD 0C 3E C5 2E 00 5C ED 99 9A 08 C4 83 00 64 54 -- 08B820
08 C4 83 00 64 54 18 9A 00 5C ED 99 9A 05 D9 9B -- 08B830
2E AD 08 36 FF 2E AD 0A 36 FF 2E 00 5C ED 99 9A -- 08B840
97 5E 9A 50 00 2C 05 AC D0 06 8B 2E AC D2 36 FF -- 08B850
83 AD 14 3E C5 2E 00 54 A6 77 9A 18 C4 83 00 5C -- 08B860
0F 74 00 07 3D 05 8B AD 18 3E C5 2E 1B 75 00 3D -- 08B870
9A 07 75 00 08 3D 05 74 00 05 3D 0A 74 00 03 3D -- 08B880
AC CE 36 FF 2E 00 54 AB DB 9A 05 EB 00 54 A8 6F -- 08B890
D0 36 FF 2E AC D2 36 FF 2E 01 6A AC CC 36 FF 2E -- 08B8A0
0C C4 83 00 14 F5 9B 9A 35 FF AC C8 3E C5 2E AC -- 08B8B0
2E 02 C4 83 00 14 FA 45 9A 35 FF AC C8 3E C5 2E -- 08B8C0
9B 00 54 A4 2A 9A 05 EB 00 00 05 C7 AC BC 3E C5 -- 08B8D0
83 AC C0 3E C5 2E 00 00 0A C8 57 56 CB 5E 5F C9 -- 08B8E0
00 01 05 C7 AC D4 3E C5 2E 01 BD E9 03 75 00 3D -- 08B8F0

C7 AC CC 3E C5 2E 16 75 4D 3D 80 AC E8 3E C5 2E -- 08B900
14 EB AD 1C 36 FF 2E AD 1E 36 FF 2E 00 02 12 45 -- 08B910
2E AD 22 36 FF 2E 00 04 12 45 C7 AC CC 3E C5 2E -- 08B920
5E 9A AC DC 36 FF 2E AC DE 36 FF 2E AD 20 36 FF -- 08B930
AD 24 36 FF 2E AD 26 36 FF 2E 08 C4 83 00 5C 97 -- 08B940
5E 9A 50 00 16 05 AC DC 06 8B 2E AC DE 36 FF 2E -- 08B950
99 9A 05 D9 9B AD 30 3E C5 2E 08 C4 83 00 5C 97 -- 08B960
00 5C ED 99 9A 08 C4 83 00 64 53 E8 9A 00 5C ED -- 08B970
53 E8 9A 00 5C ED 99 9A 05 D9 9B AD 2C 3E C5 2E -- 08B980
2E AD 2A 36 FF 2E 00 5C ED 99 9A 08 C4 83 00 64 -- 08B990
16 05 AC DC 06 8B 2E AC DE 36 FF 2E AD 28 36 FF -- 08B9A0
2E AD 36 36 FF 2E 18 C4 83 00 5C 97 5E 9A 50 00 -- 08B9B0
2C 05 AC DC 06 8B 2E AC DE 36 FF 2E AD 34 36 FF -- 08B9C0
9B AD 40 3E C5 2E 08 C4 83 00 5C 97 5E 9A 50 00 -- 08B9D0
9A 08 C4 83 00 64 54 18 9A 00 5C ED 99 9A 05 D9 -- 08B9E0
5C ED 99 9A 05 D9 9B AD 3C 3E C5 2E 00 5C ED 99 -- 08B9F0
```

615

```
00 5C ED 99 9A 08 C4 83 00 64 54 18 9A 00 01 FE -- 08BA00
2E AC DE 36 FF 2E AD 38 36 FF 2E AD 3A 36 FF 2E -- 08BA10
18 C4 83 00 5C 97 5E 9A 50 00 2C 05 AC DC 06 8B -- 08BA20
FA 46 8D 16 50 F6 46 8D 16 50 FE 46 89 00 03 B8 -- 08BA30
ED 99 9A F6 46 D9 9B 0A C4 83 00 34 FC 2D 9A 50 -- 08BA40
00 54 A7 6C 9A 00 5C ED 99 9A FA 46 D9 9B 00 5C -- 08BA50
AA 96 9A 07 74 00 3D 83 AD 44 3E C5 2E 10 C4 83 -- 08BA60
FF 2E AC CE 36 FF 2E 00 54 AC 49 9A 05 EB 00 54 -- 08BA70
2E AC DC 36 FF 2E AC DE 36 FF 2E 01 6A AC CC 36 -- 08BA80
C5 2E 0C C4 83 00 14 F5 9B 9A 35 FF AC C8 3E C5 -- 08BA90
3E C5 2E 02 C4 83 00 14 FA 45 9A 35 FF AC C8 3E -- 08BAA0
EC 8B 55 57 56 CB 5E 5F C9 9B 00 00 05 C7 AC D4 -- 08BAB0
FF AC C8 3E C5 2E 21 74 00 3D 83 AC B8 3E C5 2E -- 08BAC0
05 C7 AC B8 3E C5 2E 02 C4 83 00 14 F8 4D 9A 35 -- 08BAD0
56 CB 5E 5F C9 00 00 05 C7 AC C0 3E C5 2E 00 00 -- 08BAE0
05 C7 31 74 00 3D 83 AC C0 3E C5 2E EC 8B 55 57 -- 08BAF0
AC BC 3E C5 2E 00 01 05 C7 AC B8 3E C5 2E 00 00 -- 08BB00
03 05 AC C4 06 8B 2E AC C6 36 FF 2E 00 00 05 C7 -- 08BB10
C9 00 54 A2 55 9A 04 C4 83 00 64 15 E0 9A 50 00 -- 08BB20
3D 83 AC B8 3E C5 2E 00 00 12 C8 57 56 CB 5E 5F -- 08BB30
46 8D 16 50 FE 46 89 00 02 B8 00 DD E9 03 75 00 -- 08BB40
2E 0A C4 83 00 34 FC 2D 9A 50 FA 46 8D 16 50 F6 -- 08BB50
8B 2E AC D2 36 FF 2E AD 48 36 FF 2E AD 4A 36 FF -- 08BB60
9B 08 C4 83 00 5C 97 5E 9A 50 00 42 05 AC D0 06 -- 08BB70
94 9A EE 5E DC 9B F6 46 D9 9B EE 5E DD 9B E8 D9 -- 08BB80
D9 9B 00 5C ED 99 9A FA 46 D9 9B 1E 72 00 5C ED -- 08BB90
4C 36 FF 2E AD 4E 36 FF 2E 00 5C ED 99 9A F6 46 -- 08BBA0
F6 46 D9 9B 00 5C ED 99 9A FA 46 D9 9B 1C EB AD -- 08BBB0
2E AD 50 36 FF 2E AD 52 36 FF 2E 00 5C ED 99 9A -- 08BBC0
97 5E 9A 50 00 42 05 AC D0 06 8B 2E AC D2 36 FF -- 08BBD0
6A AC CC 36 FF 2E AC CE 36 FF 2E 18 C4 83 00 5C -- 08BBE0
AC C8 3E C5 2E AC D0 36 FF 2E AC D2 36 FF 2E 01 -- 08BBF0
BC 3E C5 2E 0C C4 83 00 14 F5 9B 9A 35 FF 01 FE -- 08BC00
FA 45 9A 35 FF AC C8 3E C5 2E 0F 75 00 3D 83 AC -- 08BC10
00 00 08 C8 57 56 CB 5E 5F C9 9B 02 C4 83 00 14 -- 08BC20
36 FF 2E 00 EB E9 03 75 00 3D 83 AC C0 3E C5 2E -- 08BC30
DC 06 8B 2E AC DE 36 FF 2E AD 54 36 FF 2E AD 56 -- 08BC40
46 DD 9B 08 C4 83 00 5C 97 5E 9A 50 00 42 05 AC -- 08BC50
3E C5 2E 12 46 DD 9B 1D D9 9B AC E0 3E C5 2E 0A -- 08BC60
9B 05 D9 9B F8 5E DD 9B E8 D9 9B 1D D9 9B AC E4 -- 08BC70
9B AC E0 3E C5 2E 26 72 00 5C ED 94 9A F8 5E DC -- 08BC80
9A 05 D9 9B AC E4 3E C5 2E 00 5C ED 99 9A 05 D9 -- 08BC90

24 EB AD 58 36 FF 2E AD 5A 36 FF 2E 00 5C ED 99 -- 08BCA0
3E C5 2E 00 5C ED 99 9A 05 D9 9B AC E0 3E C5 2E -- 08BCB0
2E AD 5E 36 FF 2E 00 5C ED 99 9A 05 D9 9B AC E4 -- 08BCC0
42 05 AC DC 06 8B 2E AC DE 36 FF 2E AD 5C 36 FF -- 08BCD0
2E AC CE 36 FF 2E 18 C4 83 00 5C 97 5E 9A 50 00 -- 08BCE0
AC DC 36 FF 2E AC DE 36 FF 2E 01 6A AC CC 36 FF -- 08BCF0
2E 0C C4 83 00 14 F5 9B 9A 35 FF AC C8 3E C5 2E -- 08BD00
35 FF AC C8 3E C5 2E 0F 75 00 3D 83 AC D4 3E C5 -- 08BD10
55 57 56 CB 5E 5F C9 9B 02 C4 83 00 14 FA 45 9A -- 08BD20
D2 36 FF 2E AD 60 36 FF 2E AD 62 36 FF 2E EC 8B -- 08BD30
83 00 5C 97 5E 9A 50 00 58 05 AC D0 06 8B 2E AC -- 08BD40
68 3E C5 2E 32 74 00 3D 83 AD 64 3E C5 2E 08 C4 -- 08BD50
6E 36 FF 2E 57 AD 6A 36 FF 2E 12 74 00 3D 80 AD -- 08BD60
36 FF 2E AD 76 36 FF 2E 46 EB AD 6C 36 FF 2E AD -- 08BD70
C5 2E 30 EB AD 70 36 FF 2E AD 72 36 FF 2E AD 74 -- 08BD80
FF 2E 57 AD 6A 36 FF 2E 12 74 00 3D 80 AD 68 3E -- 08BD90
2E AD 76 36 FF 2E 14 EB AD 78 36 FF 2E AD 7A 36 -- 08BDA0
```

616

```
FF 2E AD 7C 36 FF 2E AD 7E 36 FF 2E AD 74 36 FF -- 08BDB0
5C 97 5E 9A 50 00 58 05 AC D0 06 8B 2E AC D2 36 -- 08BDC0
FF 2E AD 80 36 FF 2E AD 82 36 FF 2E 0C C4 83 00 -- 08BDD0
5C 97 5E 9A 50 00 6E 05 AC D0 06 8B 2E AC D2 36 -- 08BDE0
C5 2E 41 74 00 3D 83 AD 84 3E C5 2E 08 C4 83 00 -- 08BDF0
54 18 9A 00 5C ED 99 9A 05 DD 9B AD 90 3E 01 FE -- 08BE00
9B AD 8C 3E C5 2E 00 5C ED 99 9A 08 C4 83 00 64 -- 08BE10
9A 08 C4 83 00 64 54 18 9A 00 5C ED 99 9A 05 DD -- 08BE20
D5 E9 AD 88 36 FF 2E AD 8A 36 FF 2E 00 5C ED 99 -- 08BE30
AD 9C 3E C5 2E 41 74 00 3D 83 AD 14 3E C5 2E 00 -- 08BE40
08 C4 83 00 64 54 18 9A 00 5C ED 99 9A 05 D9 9B -- 08BE50
ED 99 9A 05 D9 9B AD 98 3E C5 2E 00 5C ED 99 9A -- 08BE60
2E 00 5C ED 99 9A 08 C4 83 00 64 54 18 9A 00 5C -- 08BE70
18 3E C5 2E 00 8A E9 AD 94 36 FF 2E AD 96 36 FF -- 08BE80
05 D9 9B AD 10 3E C5 2E 40 75 00 05 3D 05 8B AD -- 08BE90
ED 99 9A 08 C4 83 00 64 54 18 9A 00 5C ED 99 9A -- 08BEA0
9A 00 5C ED 99 9A 05 D9 9B AD 0C 3E C5 2E 00 5C -- 08BEB0
A2 36 FF 2E 00 5C ED 99 9A 08 C4 83 00 64 54 18 -- 08BEC0
05 D9 9B AD AC 3E C5 2E 3E EB AD A0 36 FF 2E AD -- 08BED0
ED 99 9A 08 C4 83 00 64 54 18 9A 00 5C ED 99 9A -- 08BEE0
9A 00 5C ED 99 9A 05 D9 9B AD A8 3E C5 2E 00 5C -- 08BEF0
A6 36 FF 2E 00 5C ED 99 9A 08 C4 83 00 64 54 18 -- 08BF00
AC D0 06 8B 2E AC D2 36 FF 2E AD A4 36 FF 2E AD -- 08BF10
CE 36 FF 2E 18 C4 83 00 5C 97 5E 9A 50 00 6E 05 -- 08BF20
36 FF 2E AC D2 36 FF 2E 01 6A AC CC 36 FF 2E AC -- 08BF30
C4 83 00 14 F5 9B 9A 35 FF AC C8 3E C5 2E AC D0 -- 08BF40
AD B2 36 FF 2E EC 8B 55 57 56 CB 5E 5F C9 9B 0C -- 08BF50
05 AC DC 06 8B 2E AC DE 36 FF 2E AD B0 36 FF 2E -- 08BF60
AD B4 3E C5 2E 08 C4 83 00 5C 97 5E 9A 50 00 58 -- 08BF70
2E 12 74 00 3D 80 AD B8 3E C5 2E 32 74 00 3D 83 -- 08BF80
EB AD BC 36 FF 2E AD BE 36 FF 2E 57 AD BA 36 FF -- 08BF90
AD C2 36 FF 2E AD C4 36 FF 2E AD C6 36 FF 2E 46 -- 08BFA0
74 00 3D 80 AD B8 3E C5 2E 30 EB AD C0 36 FF 2E -- 08BFB0
C8 36 FF 2E AD CA 36 FF 2E 57 AD BA 36 FF 2E 12 -- 08BFC0
36 FF 2E AD C4 36 FF 2E AD C6 36 FF 2E 14 EB AD -- 08BFD0
DC 06 8B 2E AC DE 36 FF 2E AD CC 36 FF 2E AD CE -- 08BFE0
36 FF 2E 0C C4 83 00 5C 97 5E 9A 50 00 58 05 AC -- 08BFF0
8B 2E AC DE 36 FF 2E AD D0 36 FF 2E AD D2 01 FE -- 08C000
2E 08 C4 83 00 5C 97 5E 9A 50 00 6E 05 AC DC 06 -- 08C010
64 54 18 9A 00 5C ED 99 9A 05 D9 9B AD DC 3E C5 -- 08C020
D9 9B AD D8 3E C5 2E 00 5C ED 99 9A 08 C4 83 00 -- 08C030

99 9A 08 C4 83 00 64 54 18 9A 00 5C ED 99 9A 05 -- 08C040
36 FF 2E AD D4 36 FF 2E AD D6 36 FF 2E 00 5C ED -- 08C050
00 5C 97 5E 9A 50 00 6E 05 AC DC 06 8B 2E AC DE -- 08C060
2E 01 6A AC CC 36 FF 2E AC CE 36 FF 2E 18 C4 83 -- 08C070
35 FF AC C8 3E C5 2E AC DC 36 FF 2E AC DE 36 FF -- 08C080
55 57 56 CB 5E 5F C9 9B 0C C4 83 00 14 F5 9B 9A -- 08C090
D2 36 FF 2E AD E0 36 FF 2E AD E2 36 FF 2E EC 8B -- 08C0A0
83 00 5C 97 5E 9A 50 00 58 05 AC D0 06 8B 2E AC -- 08C0B0
D2 36 FF 2E AD E4 36 FF 2E AD E6 36 FF 2E 08 C4 -- 08C0C0
83 00 5C 97 5E 9A 50 00 6E 05 AC D0 06 8B 2E AC -- 08C0D0
FF 2E 01 6A AC CC 36 FF 2E AC CE 36 FF 2E 08 C4 -- 08C0E0
9A 35 FF AC C8 3E C5 2E AC D0 36 FF 2E AC D2 36 -- 08C0F0
EC 8B 55 57 56 CB 5E 5F C9 0C C4 83 00 14 F5 9B -- 08C100
2E AC DE 36 FF 2E AD E8 36 FF 2E AD EA 36 FF 2E -- 08C110
08 C4 83 00 5C 97 5E 9A 50 00 58 05 AC DC 06 8B -- 08C120
2E AC DE 36 FF 2E AD EC 36 FF 2E AD EE 36 FF 2E -- 08C130
08 C4 83 00 5C 97 5E 9A 50 00 6E 05 AC DC 06 8B -- 08C140
DE 36 FF 2E 01 6A AC CC 36 FF 2E AC CE 36 FF 2E -- 08C150
```

617

```
F5  9B  9A  35  FF  AC  C8  3E  C5  2E  AC  DC  36  FF  2E  AC  --  08C160
F5  A0  00  3C  F3  EE  00  CB  5E  5F  C9  0C  C4  83  00  14  --  08C170
F3  F4  00  3C  F3  F2  00  3C  86  F6  00  3C  F3  F0  00  3C  --  08C180
F5  14  00  3C  95  62  00  3C  F5  A2  00  3C  F4  90  00  3C  --  08C190
F0  FE  00  6C  33  BE  00  3C  F5  9C  00  3C  F5  98  00  3C  --  08C1A0
90  7E  00  3C  F1  40  00  3C  F1  2A  00  3C  F1  14  00  3C  --  08C1B0
90  9C  00  3C  F1  6A  00  3C  F1  54  00  3C  90  7A  00  3C  --  08C1C0
F1  7E  00  3C  86  9A  00  3C  90  C2  00  3C  90  98  00  3C  --  08C1D0
92  CE  00  3C  F1  C0  00  3C  F1  AA  00  3C  F1  94  00  3C  --  08C1E0
92  EC  00  3C  F1  EA  00  3C  F1  D4  00  3C  92  CA  00  3C  --  08C1F0
00  3C  F1  FE  00  3C  96  D0  00  3C  92  E8  00  3C  01  FE  --  08C200
00  3C  F2  52  00  3C  F2  3C  00  3C  F2  28  00  3C  F2  14  --  08C210
00  3C  90  ED  00  3C  91  14  00  3C  F2  7A  00  3C  F2  66  --  08C220
00  3C  F2  AA  00  3C  90  C9  00  3C  F2  9D  00  3C  F2  90  --  08C230
00  3C  F2  D6  00  24  77  96  00  3C  F2  C0  00  3C  F2  B5  --  08C240
00  6C  28  DC  00  3C  F2  EA  00  24  77  A0  00  24  77  98  --  08C250
00  3C  87  DA  00  3C  F3  12  00  3C  F2  FE  00  6C  28  D8  --  08C260
00  3C  94  FF  00  3C  96  D2  00  3C  F3  26  00  3C  87  DE  --  08C270
00  3C  F3  56  00  3C  94  ED  00  3C  F3  49  00  3C  F3  3C  --  08C280
00  3C  93  78  00  3C  F3  82  00  3C  F3  6C  00  3C  F3  61  --  08C290
00  3C  F3  C2  00  3C  F3  AC  00  3C  F3  96  00  3C  93  74  --  08C2A0
46  C7  13  FF  46  C6  00  00  66  C8  57  56  00  3C  F3  D8  --  08C2B0
03  B3  46  C6  04  B5  46  C6  00  04  BE  46  C7  3E  80  C0  --  08C2C0
83  B9  98  3E  C5  2E  00  00  9A  46  C7  00  01  9C  46  C7  --  08C2D0
1E  9A  B9  9C  36  FF  2E  B9  9E  36  FF  2E  12  7E  00  3D  --  08C2E0
64  4E  A1  9A  C0  76  FF  BE  76  FF  04  C4  83  00  5C  97  --  08C2F0
C6  46  0B  C8  46  8B  C8  56  89  C6  46  89  04  C4  83  00  --  08C300
76  FF  C0  46  89  B9  A0  3E  F7  2E  99  C0  46  8B  42  75  --  08C310
C8  56  89  C6  46  89  04  C4  83  00  64  4E  A1  9A  50  BE  --  08C320
36  FF  2E  B9  A4  36  FF  2E  1C  75  C6  46  0B  C8  46  8B  --  08C330
01  05  C7  0E  7E  C5  04  C4  83  00  5C  97  1E  9A  B9  A2  --  08C340
C4  56  89  C2  46  89  C8  56  8B  C6  46  8B  02  40  E9  00  --  08C350
BA  46  89  40  04  2B  26  04  45  8B  0A  7E  C5  0A  76  C4  --  08C360
8B  BC  46  89  BA  7E  F7  99  C0  46  8B  9E  46  89  E0  D1  --  08C370
8B  CA  46  89  05  8B  B8  46  89  40  02  44  2B  26  06  45  --  08C380
00  00  B6  46  C7  CE  46  89  02  45  8B  CC  46  89  04  45  --  08C390
CA  76  FF  CC  76  FF  29  7E  00  3D  83  B9  98  3E  C5  2E  --  08C3A0
76  FF  CE  76  FF  50  48  CE  46  03  B8  46  8B  BA  76  FF  --  08C3B0
00  5C  97  1E  9A  B9  A6  36  FF  2E  B9  A8  36  FF  2E  B8  --  08C3C0
46  03  01  B6  E9  03  7C  B8  46  3B  B6  46  8B  10  C4  83  --  08C3D0

8B  BC  46  89  B6  46  2B  B8  46  8B  09  7E  B8  46  3B  BC  --  08C3E0
3D  83  B9  98  3E  C5  2E  D0  46  89  48  CE  46  03  BC  46  --  08C3F0
FF  2E  B9  AC  36  FF  2E  CE  76  FF  50  16  7E  00  01  FE  --  08C400
B9  98  3E  C5  2E  08  C4  83  00  5C  97  1E  9A  B9  AA  36  --  08C410
9A  B9  AE  36  FF  2E  B9  B0  36  FF  2E  12  7E  00  3D  83  --  08C420
6A  00  6A  0E  76  FF  10  76  FF  04  C4  83  00  5C  97  1E  --  08C430
98  FF  46  8A  C2  76  FF  C4  76  FF  50  CA  46  8D  16  00  --  08C440
7E  C5  14  C4  83  00  54  5C  A2  9A  50  98  B3  46  8A  50  --  08C450
03  7F  00  3D  83  B9  98  3E  C5  2E  27  74  00  3D  83  0E  --  08C460
36  FF  2E  B9  B4  36  FF  2E  35  FF  0E  7E  C5  01  23  E9  --  08C470
C2  46  8B  01  09  E9  06  C4  83  00  5C  97  1E  9A  B9  B2  --  08C480
B0  56  89  AE  46  89  40  AC  56  89  AA  46  89  C4  56  8B  --  08C490
46  8B  A8  56  89  A6  46  89  40  A4  56  89  A2  46  89  40  --  08C4A0
7E  00  3D  83  B9  98  3E  C5  2E  A0  46  89  BA  6E  F7  BC  --  08C4B0
9A  B9  B6  36  FF  2E  B9  B8  36  FF  2E  BC  76  FF  50  16  --  08C4C0
A8  76  FF  A2  76  FF  A4  76  FF  08  C4  83  00  5C  97  1E  --  08C4D0
FF  AE  76  FF  B0  76  FF  AA  76  FF  AC  76  FF  A6  76  FF  --  08C4E0
16  C4  83  00  5C  FC  A8  9A  9C  76  FF  9A  76  FF  A0  76  --  08C4F0
2E  B9  BC  36  FF  2E  12  7E  00  3D  83  B9  98  3E  C5  2E  --  08C500
```

618

```
FF  10  76  FF  04  C4  83  00  5C  97  1E  9A  B9  BA  36  FF  --  08C510
76  FF  C4  76  FF  50  CA  46  8D  16  00  6A  00  6A  0E  76  --  08C520
00  54  5C  A2  9A  50  98  B5  46  8A  50  98  FF  46  8A  C2  --  08C530
B9  98  3E  C5  2E  1C  74  00  3D  83  0E  7E  C5  14  C4  83  --  08C540
2E  B9  C0  36  FF  2E  35  FF  0E  7E  C5  41  7E  00  3D  83  --  08C550
D0  46  8B  B6  46  01  BC  46  8B  FF  1B  E9  B9  BE  36  FF  --  08C560
54  E9  03  7F  00  3D  83  B9  98  3E  C5  2E  CE  46  89  40  --  08C570
00  5C  97  1E  9A  B9  C2  36  FF  2E  B9  C4  36  FF  2E  FE  --  08C580
64  4E  E3  9A  C6  76  FF  C8  76  FF  FE  3F  E9  04  C4  83  --  08C590
FF  2E  12  7E  00  3D  83  B9  98  3E  C5  2E  04  C4  83  00  --  08C5A0
04  C4  83  00  5C  97  1E  9A  B9  C6  36  FF  2E  B9  C8  36  --  08C5B0
13  FF  46  C6  00  00  D6  C8  57  56  CB  5E  5F  C9  C0  2B  --  08C5C0
86  C6  00  04  80  46  C7  3E  80  82  46  C7  16  FD  46  C6  --  08C5D0
86  C7  00  01  FF  42  86  C7  03  FF  73  86  C6  04  FF  75  --  08C5E0
FF  2E  12  7E  00  3D  83  B9  98  3E  C5  2E  00  00  FF  40  --  08C5F0
83  00  5C  97  1E  9A  B9  CA  36  FF  2E  B9  CC  36  01  FE  --  08C600
76  FF  82  46  89  B9  A0  3E  F7  2E  99  82  46  8B  04  C4  --  08C610
92  56  89  90  46  89  04  C4  83  00  64  4E  A1  9A  50  80  --  08C620
00  3D  83  B9  98  3E  C5  2E  26  75  90  46  0B  92  46  8B  --  08C630
5C  97  1E  9A  B9  CE  36  FF  2E  B9  D0  36  FF  2E  12  7E  --  08C640
46  8B  07  C3  E9  00  01  05  C7  0E  7E  C5  04  C4  83  00  --  08C650
89  E0  D1  82  46  8B  8A  56  89  88  46  89  92  56  8B  90  --  08C660
89  04  C4  83  00  64  4E  A1  9A  50  80  76  FF  FF  7E  86  --  08C670
3E  C5  2E  16  75  8C  46  0B  8E  46  8B  8E  56  89  8C  46  --  08C680
D2  36  FF  2E  B9  D4  36  FF  2E  BD  7E  00  3D  83  B9  98  --  08C690
2E  86  56  89  84  46  89  8E  56  8B  8C  46  8B  A9  EB  B9  --  08C6A0
2E  00  00  FF  3E  86  C7  2D  75  00  3D  83  B9  D6  3E  C5  --  08C6B0
FF  3E  BE  8B  1A  7D  05  3B  FF  3E  86  8B  B9  DA  3E  C5  --  08C6C0
01  00  2D  81  B9  E0  1E  8E  2E  B9  DE  3E  03  2E  E7  D1  --  08C6D0
26  04  45  8B  0A  7E  C5  0A  76  C4  D9  EB  FF  3E  86  FF  --  08C6E0
82  46  8B  FF  46  86  89  E0  D1  FF  7A  86  89  40  04  2B  --  08C6F0
02  44  2B  26  06  45  8B  FF  7C  86  89  FF  7A  BE  F7  99  --  08C700
CA  46  89  04  45  8B  C8  46  89  05  8B  FF  78  86  89  40  --  08C710
98  3E  C5  2E  00  00  FF  76  86  C7  CC  46  89  02  45  8B  --  08C720
FF  7A  B6  FF  C8  76  FF  CA  76  FF  2C  7E  00  3D  83  B9  --  08C730
FF  78  B6  FF  CC  76  FF  50  48  CC  46  03  FF  78  86  8B  --  08C740
83  00  5C  97  1E  9A  B9  E2  36  FF  2E  B9  E4  36  FF  2E  --  08C750
40  E0  D1  CA  46  8B  94  46  89  E0  D1  C8  46  8B  10  C4  --  08C760
06  A1  E9  03  7C  FF  78  86  3B  FF  76  86  8B  96  46  89  --  08C770

86  2B  FF  78  86  8B  0C  7E  FF  78  86  3B  FF  7C  86  03  --  08C780
46  89  48  CC  46  03  FF  7C  86  8B  FF  7C  86  89  FF  76  --  08C790
89  40  E0  D1  CE  46  8B  98  46  89  E0  D1  CC  46  8B  CE  --  08C7A0
E8  36  FF  2E  4E  7E  00  3D  83  B9  98  3E  C5  2E  9A  46  --  08C7B0
76  FF  04  C4  83  00  5C  97  1E  9A  B9  E6  36  FF  2E  B9  --  08C7C0
2E  B9  EC  36  FF  2E  C8  76  FF  CA  76  FF  CC  76  FF  CE  --  08C7D0
FF  9A  76  FF  0C  C4  83  00  5C  97  1E  9A  B9  EA  36  FF  --  08C7E0
36  FF  2E  B9  F0  36  FF  2E  94  76  FF  96  76  FF  98  76  --  08C7F0
98  3E  C5  2E  0C  C4  83  00  5C  97  1E  9A  B9  EE  01  FE  --  08C800
36  FF  2E  B9  F4  36  FF  2E  12  7E  00  01  3D  05  8B  B9  --  08C810
0E  76  FF  10  76  FF  04  C4  83  00  5C  97  1E  9A  B9  F2  --  08C820
8A  88  76  FF  8A  76  FF  50  C8  46  8D  16  00  6A  00  6A  --  08C830
83  00  54  5C  A2  9A  50  98  FF  73  86  8A  50  98  FF  46  --  08C840
83  B9  98  3E  C5  2E  27  74  00  3D  83  0E  7E  C5  14  C4  --  08C850
F8  36  FF  2E  35  FF  0E  7E  C5  05  BC  E9  03  7F  00  3D  --  08C860
A2  E9  06  C4  83  00  5C  97  1E  9A  B9  F6  36  FF  2E  B9  --  08C870
36  FF  2E  12  7E  00  01  3D  05  8B  B9  98  3E  C5  2E  05  --  08C880
FF  04  C4  83  00  5C  97  1E  9A  B9  FA  36  FF  2E  B9  FC  --  08C890
76  FF  50  94  46  8D  16  00  6A  00  6A  0E  76  FF  10  76  --  08C8A0
9A  50  98  FF  73  86  8A  50  98  FD  46  8A  84  76  FF  86  --  08C8B0
```

```
2E 1E 74 00 3D 83 0E 7E C5 14 C4 83 00 54 5C A2 -- 08C8C0
FF 0E 7E C5 05 47 E9 03 7F 00 3D 83 B9 98 3E C5 -- 08C8D0
88 46 8B 89 EB B9 FE 36 FF 2E BA 00 36 FF 2E 35 -- 08C8E0
FF 6E 86 89 40 FF 6C 96 89 FF 6A 86 89 8A 56 8B -- 08C8F0
86 89 40 FF 64 96 89 FF 62 86 89 40 FF 70 96 89 -- 08C900
86 89 FF 7A AE F7 FF 7C 86 8B FF 68 96 89 FF 66 -- 08C910
86 C7 00 00 FF 5C 86 C7 00 00 FF 5E 86 C7 FF 60 -- 08C920
00 00 FF 5A 86 C7 00 00 FF 34 86 C7 00 00 FF 32 -- 08C930
46 AE F7 03 47 E9 03 7C FF 7C 86 3B FF 5A 86 8B -- 08C940
FF 38 96 89 FF 36 86 89 99 C7 8B E7 D1 F8 8B FF -- 08C950
03 7C FF 7A 86 3B FF 50 86 8B 00 00 FF 50 86 C7 -- 08C960
FF 44 86 89 FF 34 96 13 FF 32 86 03 99 02 CB E9 -- 08C970
03 C7 03 02 E0 C1 FF 50 86 8B E7 D1 FF 36 BE 8B -- 08C980
46 86 8B FF 30 96 89 FF 2E 86 89 86 56 8B 84 46 -- 08C990
C7 FF 2C 96 89 FF 2A 86 89 FF 2E 86 03 E0 D1 FF -- 08C9A0
B9 DA 3E C5 2E 00 00 FF 3E 86 C7 00 00 FF 3A 86 -- 08C9B0
03 2E E7 D1 FF 3E BE 8B 4E 7D 05 3B FF 3E 86 8B -- 08C9C0
BE C5 FF 3C 86 89 05 8B B9 E0 1E 8E 2E B9 DE 3E -- 08C9D0
3C 86 3B 02 45 8B 1E 74 FF 3C 86 3B 05 8B FF 2E -- 08C9E0
8B 09 74 FF 3C 86 3B 05 8B FF 2A BE C5 15 74 FF -- 08C9F0
00 01 FF 3A 86 C7 08 75 FF 3C 86 3B 02 45 01 FE -- 08CA00
E9 03 74 01 FF 3A BE 83 A5 EB FF 3E 86 FF 06 EB -- 08CA10
00 A0 E9 03 74 01 FF 5E BE 83 FF 5E 86 FF 00 CA -- 08CA20
FF 4E 86 89 FF 50 86 8B FF 58 86 89 FF 5A 86 8B -- 08CA30
86 89 FF 5A 86 8B 00 80 E9 03 75 00 FF 5C BE 83 -- 08CA40
FF FF 48 BE 83 FF 48 86 89 48 FF 50 86 8B FF 52 -- 08CA50
48 FF 7A 86 8B FF 52 86 89 48 FF 52 86 8B 12 75 -- 08CA60
4A 7E 00 01 3D 05 8B B9 98 3E C5 2E FF 48 86 89 -- 08CA70
1E 9A BA 02 36 FF 2E BA 04 36 FF 2E FF 5C B6 FF -- 08CA80
FF 2E FF 54 B6 FF FF 4A B6 FF 06 C4 83 00 5C 97 -- 08CA90
08 C4 83 00 5C 97 1E 9A BA 06 36 FF 2E BA 08 36 -- 08CAA0
36 FF 2E BA 0C 36 FF 2E FF 52 B6 FF FF 48 B6 FF -- 08CAB0
00 00 FF 5C 86 C7 08 C4 83 00 5C 97 1E 9A BA 0A -- 08CAC0
2E 01 4D E9 03 7F 00 01 3D 05 8B B9 98 3E C5 2E -- 08CAD0
FF 5C 86 FF 01 38 E9 BA 0E 36 FF 2E BA 10 36 FF -- 08CAE0
86 89 FF 5A 86 8B 01 00 E9 03 74 01 FF 5C BE 83 -- 08CAF0
75 00 FF 5E BE 83 FF 4A 86 89 FF 50 86 8B FF 54 -- 08CB00
FF 50 86 8B FF 56 86 89 FF 5A 86 8B 00 E0 E9 03 -- 08CB10

FF 56 86 8B 12 75 FF FF 4C BE 83 FF 4C 86 89 48 -- 08CB20
C5 2E FF 4C 86 89 48 FF 7A 86 8B FF 56 86 89 48 -- 08CB30
FF 2E FF 5E B6 FF 4A 7E 00 01 3D 05 8B B9 98 3E -- 08CB40
06 C4 83 00 5C 97 1E 9A BA 12 36 FF 2E BA 14 36 -- 08CB50
36 FF 2E BA 18 36 FF 2E FF 58 B6 FF FF 4E B6 FF -- 08CB60
B6 FF FF 4C B6 FF 08 C4 83 00 5C 97 1E 9A BA 16 -- 08CB70
5C 97 1E 9A BA 1A 36 FF 2E BA 1C 36 FF 2E FF 56 -- 08CB80
FF 68 B6 FF FF 62 B6 FF FF 64 B6 FF 08 C4 83 00 -- 08CB90
FF 70 B6 FF FF 6A B6 FF FF 6C B6 FF FF 66 B6 FF -- 08CBA0
FF 42 B6 FF FF 40 B6 FF FF 5E B6 FF FF 6E B6 FF -- 08CBB0
01 02 E0 C1 FF 5E 86 8B 16 C4 83 00 5C FC A8 9A -- 08CBC0
86 8B FF 6E 86 01 02 E0 C1 FF 5E 86 8B FF 6A 86 -- 08CBD0
02 E0 C1 FF 5E 86 8B FF 62 86 01 02 E0 C1 FF 5E -- 08CBE0
83 04 FF 6A 86 83 00 00 FF 5E 86 C7 FF 66 86 01 -- 08CBF0
04 FF 66 86 83 04 FF 62 86 83 04 FF 6E 86 01 FE -- 08CC00
20 36 FF 2E 12 7E 00 01 3D 05 8B B9 98 3E C5 2E -- 08CC10
86 8B 04 C4 83 00 5C 97 1E 9A BA 1E 36 FF 2E BA -- 08CC20
E9 FF 50 86 FF FF 34 96 11 FF 32 86 01 99 FF 7A -- 08CC30
C8 46 8D 16 00 6A 00 6A 0E 76 FF 10 76 FF FD 28 -- 08CC40
FF 75 86 8A 50 98 FF 46 8A 88 76 FF 8A 76 FF 50 -- 08CC50
00 3D 83 0E 7E C5 14 C4 83 00 54 5C A2 9A 50 98 -- 08CC60
```

```
C5 01 A8 E9 03 7F 00 3D 83 B9 98 3E C5 2E 1F 74 -- 08CC70
E9 E9 BA 22 36 FF 2E BA 24 36 FF 2E 35 FF 0E 7E -- 08CC80
E9 03 75 00 FF 5E BE 83 FC AC E9 FF 5A 86 FF FB -- 08CC90
FF 5E B6 FF 16 7E 00 3D 83 B9 98 3E C5 2E 00 EB -- 08CCA0
83 00 5C 97 1E 9A BA 26 36 FF 2E BA 28 36 FF 2E -- 08CCB0
B6 FF FF 68 B6 FF FF 62 B6 FF FF 64 B6 FF 06 C4 -- 08CCC0
B6 FF FF 70 B6 FF FF 6A B6 FF FF 6C B6 FF FF 66 -- 08CCD0
A8 9A FF 42 B6 FF FF 40 B6 FF FF 5E B6 FF FF 6E -- 08CCE0
6A 86 01 02 E0 C1 FF 5E 86 8B 16 C4 83 00 5C FC -- 08CCF0
FF 5E 86 8B FF 6E 86 01 02 E0 C1 FF 5E 86 8B FF -- 08CD00
86 01 02 E0 C1 FF 5E 86 8B FF 62 86 01 02 E0 C1 -- 08CD10
2C 36 FF 2E 12 7E 00 3D 83 B9 98 3E C5 2E FF 66 -- 08CD20
76 FF 04 C4 83 00 5C 97 1E 9A BA 2A 36 FF 2E BA -- 08CD30
8A 76 FF 50 C8 46 8D 16 00 6A 00 6A 0E 76 FF 10 -- 08CD40
A2 9A 50 98 FF 75 86 8A 50 98 FF 46 8A 88 76 FF -- 08CD50
C5 2E 1F 74 00 3D 83 0E 7E C5 14 C4 83 00 54 5C -- 08CD60
35 FF 0E 7E C5 00 AC E9 03 7F 00 3D 83 B9 98 3E -- 08CD70
3E C5 2E FA ED E9 BA 2E 36 FF 2E BA 30 36 FF 2E -- 08CD80
FF 2E BA 34 36 FF 2E 12 7E 00 01 3D 05 8B B9 98 -- 08CD90
76 FF 10 76 FF 04 C4 83 00 5C 97 1E 9A BA 32 36 -- 08CDA0
88 76 FF 8A 76 FF 50 C8 46 8D 16 00 6A 00 6A 0E -- 08CDB0
00 54 5C A2 9A 50 98 FF 75 86 8A 50 98 FF 46 8A -- 08CDC0
2E 12 7E 00 01 3D 05 8B B9 98 3E C5 2E 14 C4 83 -- 08CDD0
C4 83 00 5C 97 1E 9A BA 36 36 FF 2E BA 38 36 FF -- 08CDE0
3D 83 B9 98 3E C5 2E 1C 74 00 3D 83 0E 7E C5 04 -- 08CDF0
2E BA 3C 36 FF 2E 35 FF 0E 7E C5 24 7E 00 01 FE -- 08CE00
8B FF 76 86 01 FF 7C 86 8B FA 65 E9 BA 3A 36 FF -- 08CE10
9A 90 76 FF 92 76 FF F9 52 E9 CC 46 89 40 CE 46 -- 08CE20
4E E3 9A 8C 76 FF 8E 76 FF 04 C4 83 00 64 4E E3 -- 08CE30
2E 12 7E 00 3D 83 B9 98 3E C5 2E 04 C4 83 00 64 -- 08CE40
C4 83 00 5C 97 1E 9A BA 3E 36 FF 2E BA 40 36 FF -- 08CE50
00 3C DB 8A 00 24 31 54 00 CB 5E 5F C9 C0 2B 04 -- 08CE60
DC 64 00 3C DC 36 00 3C DB D8 00 3C DB A0 00 02 -- 08CE70
DD 10 00 3C DC F9 00 3C DC B8 00 3C DC 7B 00 3C -- 08CE80
DD 79 00 3C DD 5E 00 3C DD 54 00 3C DD 4E 00 3C -- 08CE90
3A CE 00 24 3A CC 00 24 31 6A 00 3C DD B7 00 3C -- 08CEA0
DE 94 00 3C DE 69 00 3C DE 51 00 3C DD F8 00 24 -- 08CEB0

DF 34 00 3C DF 1F 00 3C DE DD 00 3C DE C5 00 3C -- 08CEC0
DF C8 00 3C DF B0 00 3C DF 97 00 3C DF 79 00 3C -- 08CED0
E0 1D 00 3C E0 05 00 3C DF EC 00 3C DF CE 00 3C -- 08CEE0
E0 AA 00 3C E0 93 00 3C E0 66 00 3C E0 23 00 3C -- 08CEF0
E1 8B 00 3C E1 48 00 3C E1 35 00 3C E0 EC 00 3C -- 08CF00
5F C9 05 8B C6 4E 3E C5 2E EC 8B 55 57 56 00 3C -- 08CF10
C6 4E 3E C5 2E 0A 46 8B 00 00 04 C8 57 56 CB 5E -- 08CF20
2E C0 2B 02 EB 00 01 B8 05 75 02 0A 7E 83 05 89 -- 08CF30
03 10 7E 83 0B 74 16 10 7E 83 05 89 C6 52 3E C5 -- 08CF40
05 89 C6 56 3E C5 2E C0 2B 02 EB 00 01 B8 05 74 -- 08CF50
0A 7E 83 01 DA E9 03 74 00 3D 83 C6 5A 3E C5 2E -- 08CF60
00 6A 0C 76 FF 50 FC 46 8D 16 00 CD E9 03 74 02 -- 08CF70
C4 83 00 64 40 D0 9A 01 2E 68 06 6A 06 6A 00 6A -- 08CF80
6A 04 6A 01 6A 02 6A 0C 76 FF 50 FC 46 8D 16 10 -- 08CF90
FC 46 8D 16 10 C4 83 00 64 40 D0 9A 01 30 68 06 -- 08CFA0
9A 01 2E 68 06 6A 05 6A 00 6A 00 6A 0E 76 FF 50 -- 08CFB0
6A 0E 76 FF 50 FC 46 8D 16 10 C4 83 00 64 40 D0 -- 08CFC0
83 00 64 40 D0 9A 01 30 68 06 6A 03 6A 01 6A 02 -- 08CFD0
5E 3E C5 2E 00 1C 08 84 9A 00 1C 19 54 9A 10 C4 -- 08CFE0
9A 02 C4 83 00 1C 18 E7 9A 01 6A 00 00 05 C7 C6 -- 08CFF0
00 34 3A 98 9A 00 54 C3 E8 9A 00 34 4A 2B 01 FE -- 08D000
C5 2E 00 01 05 C7 C6 62 3E C5 2E 00 34 42 F0 9A -- 08D010
```

621

```
00 04 05 C7 C6 6A 3E C5 2E 00 06 05 C7 C6 66 3E -- 08D020
05 C7 C6 72 3E C5 2E 00 05 05 C7 C6 6E 3E C5 2E -- 08D030
50 FC 46 8D 16 59 75 03 10 7E 83 00 B4 E9 00 03 -- 08D040
D0 9A 01 2E 68 06 6A 09 6A 00 6A 00 6A 0C 76 FF -- 08D050
01 6A 0C 76 FF 50 FC 46 8D 16 10 C4 83 00 64 40 -- 08D060
C4 83 00 64 40 D0 9A 01 30 68 06 6A 09 6A 03 6A -- 08D070
C6 66 3E C5 2E 05 89 C6 6A 3E C5 2E 00 09 B8 10 -- 08D080
C6 6E 3E C5 2E 05 89 C6 72 3E C5 2E C0 2B 05 89 -- 08D090
00 6A 00 6A 0C 76 FF 50 FC 46 8D 16 55 EB 05 89 -- 08D0A0
16 10 C4 83 00 64 40 D0 9A 01 2E 68 06 6A 07 6A -- 08D0B0
68 06 6A 07 6A 03 6A 01 6A 0C 76 FF 50 FC 46 8D -- 08D0C0
3E C5 2E 00 07 B8 10 C4 83 00 64 40 D0 9A 01 30 -- 08D0D0
C6 6A 3E C5 2E 05 89 C6 6E 3E C5 2E 05 89 C6 72 -- 08D0E0
C5 2E 50 FC 46 8D 16 05 89 C6 66 3E C5 2E 05 89 -- 08D0F0
83 00 64 40 D0 9A 01 2D 68 03 6A 35 FF C6 66 3E -- 08D100
03 6A 35 FF C6 6A 3E C5 2E 50 FC 46 8D 16 0A C4 -- 08D110
46 88 10 46 8B 0A C4 83 00 64 40 D0 9A 01 2F 68 -- 08D120
6A 05 6A 01 6A 50 FE 46 8D 16 50 FC 46 8D 16 FE -- 08D130
C8 57 56 CB 5E 5F C9 0E C4 83 00 64 40 D0 9A 6E -- 08D140
01 D1 E9 03 74 00 3D 83 C6 5A 3E C5 2E 00 00 1E -- 08D150
75 00 0E 7E 83 01 A7 E9 E4 2A 1A 45 8A 0A 7E C5 -- 08D160
68 03 6A 35 FF C6 72 3E C5 2E 50 E2 46 8D 16 19 -- 08D170
FF 50 E2 46 8D 16 0A C4 83 00 64 40 D0 9A 01 2F -- 08D180
05 0A 46 8B 0C 76 FF 50 00 0C 05 0A 46 8B 0C 76 -- 08D190
83 00 64 40 D0 9A 00 CA 68 07 6A 01 6A 50 00 08 -- 08D1A0
50 E2 46 8D 16 01 76 E9 03 74 00 0E 7E 83 12 C4 -- 08D1B0
64 40 D0 9A 01 2F 68 03 6A 35 FF C6 6A 3E C5 2E -- 08D1C0
46 8D 16 19 75 00 0E 7E 83 01 5A E9 0A C4 83 00 -- 08D1D0
D0 9A 01 2D 68 03 6A 35 FF C6 6E 3E C5 2E 50 E2 -- 08D1E0
F4 5E D9 9B 05 D9 9B 0A 7E C5 0A C4 83 00 64 40 -- 08D1F0
0A 7E C5 E8 5E D9 9B 04 45 D9 9B 0A 7E C5 01 FE -- 08D200
9B 0C 45 D9 9B 0A 7E C5 F8 5E D9 9B 08 45 D9 9B -- 08D210
46 8D 16 50 E8 46 8D 16 50 E2 46 8D 16 EC 5E D9 -- 08D220
C4 83 00 64 40 D0 9A 00 C9 68 07 6A 02 6A 50 F4 -- 08D230
2E 50 E2 46 8D 16 00 E9 E9 03 74 00 0E 7E 83 12 -- 08D240
00 64 40 D0 9A 01 2D 68 03 6A 35 FF C6 66 3E C5 -- 08D250

E2 46 8D 16 19 75 00 0E 7E 83 00 CD E9 0A C4 83 -- 08D260
40 D0 9A 01 2D 68 03 6A 35 FF C6 6E 3E C5 2E 50 -- 08D270
F4 5E D9 9B 10 45 D9 9B 0A 7E C5 0A C4 83 00 64 -- 08D280
D9 9B 0A 7E C5 E8 5E D9 9B 14 45 D9 9B 0A 7E C5 -- 08D290
EC 5E D9 9B 04 45 D9 9B 0A 7E C5 F8 5E D9 9B 05 -- 08D2A0
D9 9B 0A 7E C5 FC 5E D9 9B 08 45 D9 9B 0A 7E C5 -- 08D2B0
E4 5E D9 9B C6 76 06 DD 2E 9B F0 5E D9 9B 0C 45 -- 08D2C0
16 50 E8 46 8D 16 50 E4 46 8D 16 50 E2 46 8D 16 -- 08D2D0
00 64 40 D0 9A 00 D2 68 09 6A 01 6A 50 F4 46 8D -- 08D2E0
C5 2E 50 E2 46 8D 16 3A 75 00 0E 7E 83 16 C4 83 -- 08D2F0
83 00 64 40 D0 9A 01 2D 68 03 6A 35 FF C6 66 3E -- 08D300
E0 07 3B 2E 43 43 00 03 B9 BE 51 BB 1F EB 0A C4 -- 08D310
05 BD 92 00 4D 00 4C 00 41 06 67 FF 2E 10 75 F9 -- 08D320
46 C7 00 00 02 C8 57 56 CB 5E 5F C9 9B BC 99 BD -- 08D330
46 3B FE 46 8B 0A 46 FF FE 46 FF 06 EB 00 00 FE -- 08D340
02 EB 00 01 B8 EA 74 00 3D 80 0A 7E C5 0D 7D 0E -- 08D350
00 FE 46 C7 00 00 02 C8 57 56 CB 5E 5F C9 C0 2B -- 08D360
7D 0E 46 3B FE 46 8B 0A 46 FF FE 46 FF 06 EB 00 -- 08D370
C0 2B 02 EB 00 01 B8 EA 75 02 3D 80 0A 7E C5 0D -- 08D380
C7 00 01 F6 46 C7 00 00 28 C8 57 56 CB 5E 5F C9 -- 08D390
C5 2E F8 46 FF 03 EB 00 00 F8 46 C7 01 70 D8 46 -- 08D3A0
F8 7E 8B 01 D5 E9 03 7E 05 3B F8 46 8B C6 7E 3E -- 08D3B0
8B 05 8B C6 84 1E 8E 2E C6 82 3E 03 2E 03 E7 C1 -- 08D3C0
```

622

```
46 C7 0B 75 00 F8 7E 83 FE 56 89 FC 46 89 02 55 -- 08D3D0
7E 8B 00 00 F2 46 C7 05 EB 4A FC 46 83 00 01 F2 -- 08D3E0
45 8B C6 84 1E 8E 2E C6 82 3E 03 2E 03 E7 C1 F8 -- 08D3F0
46 FF 07 EB FA 46 89 F2 46 8B F4 46 89 06 01 FE -- 08D400
F6 7E 83 90 7D F4 46 3B FA 46 8B 4A FC 46 83 FA -- 08D410
D9 9B FC 7E C5 FC 76 C4 00 00 F6 46 C7 62 74 00 -- 08D420
7E C5 18 76 00 5C ED 94 9A 32 5C D8 26 9B 2A 45 -- 08D430
32 45 D9 9B FC 7E C5 E6 5E D9 9B 2A 45 D9 9B FC -- 08D440
5E D9 9B 2A 45 D9 9B FC 7E C5 16 EB EE 5E D9 9B -- 08D450
9B FC 7E C5 E6 5E D9 9B 32 45 D9 9B FC 7E C5 EE -- 08D460
D9 9B 36 45 D9 9B FC 7E C5 EA 5E D9 9B 2E 45 D9 -- 08D470
9B 2A 45 D9 9B FC 7E C5 FC 76 C4 00 AC E9 E2 5E -- 08D480
D9 9B FC 7E C5 18 76 00 5C ED 94 9A 32 5C D8 26 -- 08D490
5E D9 9B 32 45 D9 9B FC 7E C5 DA 5E D9 9B 2A 45 -- 08D4A0
7E C5 DE 5E D9 9B 2A 45 D9 9B FC 7E C5 16 EB DE -- 08D4B0
5E D8 9B DE 46 D9 9B DA 5E D9 9B 32 45 D9 9B FC -- 08D4C0
EE 5E D9 9B DE 46 D9 9B 08 73 00 5C ED 94 9A EE -- 08D4D0
9B 08 76 00 5C ED 94 9A E6 5E D8 9B DA 46 D9 9B -- 08D4E0
D8 9B 2E 45 D9 9B FC 7E C5 E6 5E D9 9B DA 46 D9 -- 08D4F0
2E 45 D9 9B FC 7E C5 0B 73 00 5C ED 94 9A EA 5E -- 08D500
9A E2 5E D8 9B 36 45 D9 9B FC 7E C5 EA 5E D9 9B -- 08D510
5E D9 9B 36 45 D9 9B FC 7E C5 0B 76 00 5C ED 94 -- 08D520
1C 7D 80 FC 7E C5 43 75 41 1A 7D 80 FC 7E C5 E2 -- 08D530
94 9A E6 5E D8 9B 22 45 D9 9B FC 7E C5 3A 74 00 -- 08D540
E6 5E D9 9B 22 45 D9 9B FC 7E C5 0B 76 00 5C ED -- 08D550
00 5C ED 94 9A EE 5E D8 9B 22 45 D9 9B FC 7E C5 -- 08D560
FC 7E C5 EE 5E D9 9B 22 45 D9 9B FC 7E C5 0B 73 -- 08D570
46 01 00 2E B8 03 EB 00 18 B8 05 75 4C 1A 7D 80 -- 08D580
EE 46 D9 9B 05 89 0E 7E C5 D8 46 8B FE 7A E9 D8 -- 08D590
5D D9 9B 0A 7E C5 EA 46 D9 9B 1D D9 9B 0A 7E C5 -- 08D5A0
0C 5D D9 9B 0A 7E C5 EE 66 D8 9B E6 46 D9 9B 04 -- 08D5B0
9B 08 5D D9 9B 0A 7E C5 EA 66 D8 9B E2 46 D9 9B -- 08D5C0
6A 00 54 C4 7B 9A 00 00 0C C8 57 56 CB 5E 5F C9 -- 08D5D0
3D 8B C6 7E 3E C5 2E 02 C4 83 00 34 50 04 9A 01 -- 08D5E0
8B 05 8B C6 84 1E 8E 2E C6 82 3E 03 2E 03 E7 C1 -- 08D5F0

26 C6 7E 36 C4 2E FA 56 89 F8 46 89 02 55 01 FE -- 08D600
6B C6 84 1E 8E 2E C6 82 3E 03 2E 03 E7 C1 3C 8B -- 08D610
8B FE 56 89 FC 46 89 FA 56 8B F8 46 03 4A 06 45 -- 08D620
C5 04 45 D9 9B 0A 7E C5 1A 45 88 FC 7E C5 12 46 -- 08D630
FC 7E C5 04 45 D9 9B 0E 7E C5 08 5D D9 9B FC 7E -- 08D640
EE D9 9B 02 47 E9 03 74 4C 12 7E 83 0C 5D D9 9B -- 08D650
D8 26 9B 05 D9 9B 0A 7E C5 0A 76 C4 F4 5E DD 9B -- 08D660
0A 76 C4 10 76 00 5C ED 94 9A F4 5E DC 9B 04 64 -- 08D670
0A 76 C4 11 EB 04 64 D8 26 9B 05 D9 9B 0A 7E C5 -- 08D680
2E 9B E0 D9 9B 04 64 D8 26 9B 05 D9 9B 0A 7E C5 -- 08D690
45 C6 FC 7E C5 09 73 00 5C ED 94 9A C6 86 1E DC -- 08D6A0
7E C5 0A 76 C4 00 1B 45 C6 FC 7E C5 32 EB 01 1B -- 08D6B0
0E 76 C4 F4 5E DD 9B 04 64 D8 26 9B 05 D9 9B 0A -- 08D6C0
C5 F4 76 DC 9B 04 64 D8 26 9B 05 D9 9B 0E 7E C5 -- 08D6D0
9B FC 7E C5 05 D9 9B 0A 7E C5 1E 5D D9 9B FC 7E -- 08D6E0
C4 04 5D D9 9B FC 7E C5 05 D9 9B 0E 7E C5 1D D9 -- 08D6F0
ED 94 9A 04 5C D8 26 9B 05 D9 9B 0E 7E C5 0E 76 -- 08D700
5D D9 9B FC 7E C5 05 D9 9B 0A 7E C5 38 73 00 5C -- 08D710
7E C5 2E 5D D9 9B FC 7E C5 05 D9 9B 0E 7E C5 2A -- 08D720
9B 0E 7E C5 32 5D D9 9B FC 7E C5 04 45 D9 9B 0A -- 08D730
9B 0A 7E C5 36 EB 36 5D D9 9B FC 7E C5 04 45 D9 -- 08D740
45 D9 9B 0E 7E C5 2A 5D D9 9B FC 7E C5 04 45 D9 -- 08D750
7E C5 05 D9 9B 0A 7E C5 2E 5D D9 9B FC 7E C5 04 -- 08D760
D9 9B FC 7E C5 05 D9 9B 0E 7E C5 32 5D D9 9B FC -- 08D770
```

```
9B FC 7E C5 F4 5E DD 9B C6 8E 06 DF 2E 9B 36 5D -- 08D780
5C EE 2F 9A 00 5C ED 99 9A F4 4E DC 9B 2E 45 D9 -- 08D790
DF 2E 9B 40 55 89 3E 45 89 FC 7E C5 08 C4 83 00 -- 08D7A0
DC 9B 36 45 D9 9B FC 7E C5 F4 5E DD 9B C6 8E 06 -- 08D7B0
C5 08 C4 83 00 5C EE 2F 9A 00 5C ED 99 9A F4 4E -- 08D7C0
D9 9B 0A 7E C5 0A 76 C4 48 55 89 46 45 89 FC 7E -- 08D7D0
DF 2E 9B 57 73 00 5C ED 94 9A 04 5C D8 26 9B 05 -- 08D7E0
4E DC 9B 05 D9 9B 0A 7E C5 F4 5E DD 9B C6 8E 06 -- 08D7F0
08 C4 83 00 5C EE 2F 9A 00 5C ED 99 9A F4 01 FE -- 08D800
9B C6 8E 06 DF 2E 9B 3C 55 89 3A 45 89 FC 7E C5 -- 08D810
99 9A F4 4E DC 9B 04 45 D9 9B 0A 7E C5 F4 5E DD -- 08D820
45 89 FC 7E C5 08 C4 83 00 5C EE 2F 9A 00 5C ED -- 08D830
F4 5E DD 9B C6 8E 06 DF 2E 9B 55 EB 44 55 89 42 -- 08D840
00 5C ED 99 9A F4 4E DC 9B 04 45 D9 9B 0A 7E C5 -- 08D850
55 89 3A 45 89 FC 7E C5 08 C4 83 00 5C EE 2F 9A -- 08D860
D9 9B 0A 7E C5 F4 5E DD 9B C6 8E 06 DF 2E 9B 3C -- 08D870
83 00 5C EE 2F 9A 00 5C ED 99 9A F4 4E DC 9B 05 -- 08D880
74 00 14 7E 83 44 55 89 42 45 89 FC 7E C5 08 C4 -- 08D890
03 E7 C1 3D 8B C6 7E 3E C5 2E 00 34 44 68 9A 05 -- 08D8A0
5F C9 9B 06 45 FF C6 84 1E 8E 2E C6 82 3E 03 2E -- 08D8B0
16 8B 2E C6 82 06 8B 2E 00 00 06 C8 57 56 CB 5E -- 08D8C0
FF 07 EB 00 00 FE 46 C7 FC 56 89 FA 46 89 C6 84 -- 08D8D0
83 FA 7E C5 3F 7D 0A FE 7E 83 08 FA 46 83 FE 46 -- 08D8E0
C5 10 74 05 0B 02 45 8B FA 7E C5 1A 74 00 04 7D -- 08D8F0
C5 04 C4 83 00 64 4E E3 9A 35 FF 02 75 FF FA 7E -- 08D900
FA 7E C5 C0 2B 00 00 02 45 C7 00 00 05 C7 FA 7E -- 08D910
C6 7E 3E C5 2E B4 EB 04 45 89 FA 7E C5 06 45 89 -- 08D920
9A 01 6A EC 8B 55 57 56 CB 5E 5F C9 00 00 05 C7 -- 08D930
1C 19 54 9A 00 54 C3 E8 9A 02 C4 83 00 1C 18 E7 -- 08D940
C6 7E 3E C5 2E 00 00 04 C8 57 56 CB 5E 5F C9 00 -- 08D950
2E C6 84 06 8E 2E C6 82 36 03 2E 03 E6 C1 35 8B -- 08D960
8E 2E C6 82 3E 03 2E 03 E7 C1 3D 8B C6 7E 3E C5 -- 08D970
2E 01 94 E9 03 74 04 44 3B 26 06 45 8B C6 84 1E -- 08D980
8E 2E C6 82 3E 03 2E 03 E7 C1 3D 8B C6 7E 3E C5 -- 08D990

C5 2E 00 93 E9 03 74 03 20 3D 04 45 8B C6 84 1E -- 08D9A0
2E 03 E7 C1 3D 8B C6 7E 3E C5 2E 05 FF C6 7E 3E -- 08D9B0
2E 1C 74 00 04 7D 83 C6 84 1E 8E 2E C6 82 3E 03 -- 08D9C0
8E 2E C6 82 3E 03 2E 03 E7 C1 3D 8B C6 7E 3E C5 -- 08D9D0
C6 7E 3E C5 2E 01 38 E9 00 00 06 45 C7 C6 84 1E -- 08D9E0
81 C6 84 1E 8E 2E C6 82 3E 03 2E 03 E7 C1 3D 8B -- 08D9F0
C1 3D 8B C6 7E 3E C5 2E 4A 6A 00 C8 04 45 01 FE -- 08DA00
9A 04 75 FF C6 84 1E 8E 2E C6 82 3E 03 2E 03 E7 -- 08DA10
E7 C1 3D 8B C6 7E 3E C5 2E 04 C4 83 00 64 4E A1 -- 08DA20
02 55 89 05 89 C6 84 1E 8E 2E C6 82 3E 03 2E 03 -- 08DA30
3E 03 2E 03 E7 C1 3D 8B C6 7E 3E C5 2E 00 E2 E9 -- 08DA40
C5 2E 4A 6A 00 C8 04 45 81 C6 84 1E 8E 2E C6 82 -- 08DA50
1E 8E 2E C6 82 3E 03 2E 03 E7 C1 3D 8B C6 7E 3E -- 08DA60
FC 46 89 04 C4 83 00 64 4E A1 9A 04 75 FF C6 84 -- 08DA70
3E 03 2E 03 E7 C1 3D 8B C6 7E 3E C5 2E FE 56 89 -- 08DA80
57 56 68 74 05 0B 02 45 8B C6 84 1E 8E 2E C6 82 -- 08DA90
03 E7 C1 3D 8B C6 7E 3E C5 2E FC 76 FF FE 76 FF -- 08DAA0
2E 35 FF 02 75 FF C6 84 1E 8E 2E C6 82 3E 03 2E -- 08DAB0
8E 2E C6 82 36 03 2E 03 E6 C1 34 8B C6 7E 36 C5 -- 08DAC0
EC 9A 50 4A C7 6B 00 C8 EF 81 04 7C 8B C6 84 1E -- 08DAD0
2E 03 E7 C1 3D 8B C6 7E 3E C5 2E 5E 5F 00 5C FE -- 08DAE0
E3 9A 35 FF 02 75 FF C6 84 1E 8E 2E C6 82 3E 03 -- 08DAF0
03 E7 C1 3D 8B C6 7E 3E C5 2E 04 C4 83 00 64 4E -- 08DB00
FE 56 8B FC 46 8B C6 84 1E 8E 2E C6 82 3E 03 2E -- 08DB10
ED 7C 00 6C 33 A6 00 CB 5E 5F C9 02 55 89 05 89 -- 08DB20
```

624

```
ED 7A 00 3C  ED 74 00 3C  ED 68 00 6C  33 A8 00 3C  --  08DB30
33 B0 00 6C  33 AE 00 6C  33 AC 00 6C  33 AA 00 3C  --  08DB40
ED 80 00 3C  ED 78 3F F0  00 00 00 00  00 00 00 6C  --  08DB50
02 C8 57 56  27 10 3F 50  62 4D D2 F1  A9 FC 00 3C  --  08DB60
00 00 05 C7  D1 DC 3E C5  2E 00 00 FE  46 C7 00 00  --  08DB70
05 C7 D1 E4  3E C5 2E 00  00 05 C7 D1  E0 3E C5 2E  --  08DB80
D1 EC 3E C5  2E 00 00 05  C7 D1 E8 3E  C5 2E 00 01  --  08DB90
C5 2E D1 DE  16 8B 2E D1  DC 06 8B 2E  00 00 05 C7  --  08DBA0
16 8B 2E D1  E0 06 8B 2E  02 55 89 05  89 D1 F0 3E  --  08DBB0
E4 06 8B 2E  02 55 89 05  89 D1 F4 3E  C5 2E D1 E2  --  08DBC0
02 55 89 05  89 D1 F8 3E  C5 2E D1 E6  16 8B 2E D1  --  08DBD0
2E D2 02 36  FF 2E 05 89  D1 FC 3E C5  2E 0A 46 8B  --  08DBE0
06 36 FF 2E  04 C4 83 00  34 ED BA 9A  D2 00 36 FF  --  08DBF0
04 C4 83 00  34 EE 9B 9A  D2 04 36 FF  2E D2 01 FE  --  08DC00
0A 6A 03 6A  D1 FC 36 FF  2E D1 FE 36  FF 2E 22 6A  --  08DC10
5C A5 FF 9A  D2 08 36 FF  2E D2 0A 36  FF 2E 01 6A  --  08DC20
03 6A 57 56  07 05 C6 D2  0C 3E C5 2E  10 C4 83 00  --  08DC30
10 3E C5 2E  5E 5F 00 5C  C0 7A 9A 50  FE 46 8D 16  --  08DC40
6A 00 6A 00  6A 00 6A 13  74 00 FE 7E  83 05 89 D2  --  08DC50
C5 2E 57 56  0A C4 83 00  64 28 52 9A  FE 76 FF 00  --  08DC60
6A D2 0C 36  FF 2E D2 0E  36 FF 2E 35  FF D2 10 3E  --  08DC70
3E C5 2E 5E  5F 00 5C C0  BA 9A 50 FE  46 8D 16 FF  --  08DC80
00 6A 00 6A  00 6A 13 74  00 FE 7E 83  05 89 D2 14  --  08DC90
6A 57 56 0A  C4 83 00 64  28 52 9A FE  76 FF 00 6A  --  08DCA0
3E C5 2E 5E  5F 00 5C BF  B8 9A 50 FE  46 8D 16 6C  --  08DCB0
00 6A 00 6A  00 6A 13 74  00 FE 7E 83  05 89 D2 18  --  08DCC0
3E C5 2E 0A  C4 83 00 64  28 52 9A FE  76 FF 00 6A  --  08DCD0
1C 3E C5 2E  02 C4 83 00  64 5D 04 9A  35 FF D2 18  --  08DCE0
00 00 02 C8  57 56 CB 5E  5F C9 02 55  89 05 89 D2  --  08DCF0
56 1A 74 00  3D 83 D1 DC  3E C5 2E 00  00 FE 46 C7  --  08DD00
2E 5E 5F 00  5C C0 38 9A  50 FE 46 8D  16 0F 6A 57  --  08DD10
55 57 56 CB  5E 5F C9 E6  75 00 3D 83  D1 DC 3E C5  --  08DD20
55 57 56 CB  5E 5F C9 05  8B D1 DC 3E  C5 2E EC 8B  --  08DD30

00 54 C8 1C  9A 00 01 05  C7 D1 E0 3E  C5 2E EC 8B  --  08DD40
2E 00 00 FE  46 C7 00 00  02 C8 57 56  CB 5E 5F C9  --  08DD50
50 E0 9A 00  54 C8 1C 9A  00 01 05 C7  D1 E0 3E C5  --  08DD60
D2 0E 36 FF  2E 35 FF D2  10 3E C5 2E  57 56 00 64  --  08DD70
5C C0 BA 9A  50 FE 46 8D  16 00 6A D2  0C 36 FF 2E  --  08DD80
83 00 64 51  32 9A 05 89  D2 14 3E C5  2E 5E 5F 00  --  08DD90
01 32 45 C7  3D C5 D2 1C  3E C5 2E 78  75 00 FE 7E  --  08DDA0
C5 D2 1C 3E  C5 2E 00 01  05 C7 D1 DC  3E C5 2E 00  --  08DDB0
55 89 04 45  89 D1 DE 16  8B 2E D1 DC  06 8B 2E 3D  --  08DDC0
FF D2 18 3E  C5 2E 35 FF  D2 14 3E C5  2E 57 56 06  --  08DDD0
83 5E 5F 00  5C C0 9A 9A  50 FE 46 8D  16 00 6A 35  --  08DDE0
FE 76 FF 00  6A 00 6A 00  6A 00 6A 13  74 00 FE 7E  --  08DDF0
56 00 54 C8  1C 9A 0A C4  83 00 64 28  52 9A 01 FE  --  08DE00
C9 5E 5F 00  5C C0 38 9A  50 FE 46 8D  16 0F 6A 57  --  08DE10
C5 2E 0C 56  8B 0A 46 8B  EC 8B 55 57  56 CB 5E 5F  --  08DE20
8B 55 57 56  CB 5E 5F C9  02 55 89 05  89 D2 20 3E  --  08DE30
3E C5 2E 10  46 8B 00 01  05 C7 D1 EC  3E C5 2E EC  --  08DE40
C7 D1 E0 3E  C5 2E 09 75  01 0E 7E 83  05 89 D2 24  --  08DE50
D2 28 3E C5  2E 18 46 8B  00 54 C8 1C  9A 00 01 05  --  08DE60
FF 2E 1A 76  FF 1C 76 FF  10 6A 1A 74  C0 0B 05 89  --  08DE70
0A C4 83 00  5C ED 6E 9A  D2 2C 36 FF  2E D2 2E 36  --  08DE80
02 55 89 05  89 D2 20 3E  C5 2E 14 56  8B 12 46 8B  --  08DE90
3E C5 2E 1E  46 8B 05 89  D2 30 3E C5  2E 16 46 8B  --  08DEA0
C5 2E 05 88  D2 38 3E C5  2E 20 46 8B  05 88 D2 34  --  08DEB0
00 00 05 C7  D2 40 3E C5  2E 00 00 05  C7 D2 3C 3E  --  08DEC0
05 C7 D2 48  3E C5 2E 00  00 05 C7 D2  44 3E C5 2E  --  08DED0
```

625

```
00 00 05 C7 D2 4C 3E C5 2E 00 00 02 45 C7 00 00 -- 08DEE0
45 C7 00 00 05 C7 D2 50 3E C5 2E 00 00 02 45 C7 -- 08DEF0
00 02 45 C7 00 00 05 C7 D2 54 3E C5 2E 00 00 02 -- 08DF00
2E 00 00 02 45 C7 00 00 05 C7 D2 58 3E C5 2E 00 -- 08DF10
3E C5 2E 00 00 02 45 C7 00 00 05 C7 D2 5C 3E C5 -- 08DF20
D2 64 3E C5 2E 00 00 02 45 C7 00 00 05 C7 D2 60 -- 08DF30
6A 3D 7E 00 0C 7E 83 00 00 02 45 C7 00 00 05 C7 -- 08DF40
50 3E C5 2E 04 C4 83 00 64 4E A1 9A 0C 76 FF 04 -- 08DF50
00 8A 68 00 DB E9 03 75 C2 0B 02 55 89 05 89 D2 -- 08DF60
D2 54 3E C5 2E 04 C4 83 00 64 4E A1 9A 0C 76 FF -- 08DF70
00 0A 7E 83 00 BC E9 03 75 C2 0B 02 55 89 05 89 -- 08DF80
2E 04 C4 83 00 64 4E A1 9A 0A 76 FF 04 6A 70 7E -- 08DF90
00 98 E9 03 75 C2 0B 02 55 89 05 89 D2 4C 3E C5 -- 08DFA0
C5 2E 04 C4 83 00 64 4E A1 9A 0A 76 FF 00 BA 68 -- 08DFB0
76 FF 01 6A 7C 74 C2 0B 02 55 89 05 89 D2 58 3E -- 08DFC0
05 89 D2 5C 3E C5 2E 04 C4 83 00 64 4E A1 9A 0A -- 08DFD0
64 4E A1 9A 0A 76 FF 04 6A 61 74 C2 0B 02 55 89 -- 08DFE0
C2 0B 02 55 89 05 89 D2 48 3E C5 2E 04 C4 83 00 -- 08DFF0
46 8B 66 6A 51 7E 0C 46 03 0A 46 8B 46 74 01 FE -- 08E000
3E C5 2E 04 C4 83 00 64 4E A1 9A 50 0A 46 03 0C -- 08E010
0C 46 8B 01 6A 1F 74 C2 0B 02 55 89 05 89 D2 60 -- 08E020
64 3E C5 2E 04 C4 83 00 64 4E A1 9A 50 0A 46 03 -- 08E030
00 6A 00 6A 00 6A 13 75 C2 0B 02 55 89 05 89 D2 -- 08E040
5E 5F C9 0A C4 83 00 64 28 52 9A D3 03 68 01 6A -- 08E050
3C 3E C5 2E D2 64 36 C4 2E 00 00 0E C8 57 56 CB -- 08E060
FF 66 6A 01 05 C6 02 5C 8E 26 3C 03 26 3D 8B D2 -- 08E070
8B D2 3C 36 C5 2E D2 60 1E C4 2E 0A 76 FF 0C 76 -- 08E080
9A 50 52 02 57 8B 26 07 03 26 66 C7 6B 04 FF 3C -- 08E090
0E 76 FF 10 76 FF 00 BA 68 0A C4 83 00 5C ED 6E -- 08E0A0
03 26 00 BA 05 69 D2 40 3E C5 2E D2 58 36 C4 2E -- 08E0B0
2E 0A C4 83 00 5C ED 6E 9A 50 52 02 54 8B 26 04 -- 08E0C0
8E 26 3C 03 26 3D 8B D2 40 3E C5 2E D2 5C 36 C4 -- 08E0D0

03 7F 00 28 7D 83 0E 7E C5 05 88 16 46 8B 02 5C -- 08E0E0
F2 46 89 02 55 8B 05 8B D2 58 3E C5 2E 00 84 E9 -- 08E0F0
00 64 4E A1 9A 28 75 FF 0E 7E C5 02 6A F4 56 89 -- 08E100
03 FB 8B 00 BA 1C 69 26 D2 40 36 C4 2E 04 C4 83 -- 08E110
6A 16 75 C2 0B 2C 55 89 2A 45 89 F4 5E 8E F2 7E -- 08E120
83 00 64 28 52 9A D3 03 68 01 6A 00 6A 00 6A 00 -- 08E130
40 3E C5 2E D2 58 36 C4 2E 57 56 01 5A E9 0A C4 -- 08E140
75 FF 02 5C 8E 26 3C 03 26 F8 8B 00 BA 05 69 D2 -- 08E150
28 75 FF 2A 75 FF 2C 75 FF 0E 7E C5 2A 75 FF 2C -- 08E160
00 64 4E A1 9A 01 6A 06 6A 5E 5F 00 5C FF 6A 9A -- 08E170
C1 3D 8B D2 40 3E C5 2E D2 4C 36 C4 2E 04 C4 83 -- 08E180
C2 0B 02 55 89 05 89 02 5C 8E 26 3C 03 26 02 E7 -- 08E190
26 3C 03 26 02 E7 C1 3D 8B D2 40 3E C5 2E 8D 74 -- 08E1A0
7E C5 FC 56 89 FA 46 89 02 55 8B 05 8B 02 5C 8E -- 08E1B0
A1 9A 50 04 6A FE 46 89 05 89 FA 7E C5 05 8B 12 -- 08E1C0
0B 04 55 89 02 45 89 FA 7E C5 04 C4 83 00 64 4E -- 08E1D0
FF 12 7E C5 02 75 FF 52 57 56 FF 49 E9 03 75 C2 -- 08E1E0
00 5C FF 6A 9A 50 E0 D1 FE 46 8B 02 75 FF 04 75 -- 08E1F0
6A 00 8B E9 03 75 18 46 0B 1A 46 8B 5E 5F 01 FE -- 08E200
D2 48 36 C4 2E 04 C4 83 00 64 4E A1 9A 01 6A 06 -- 08E210
5C 8E 26 3C 03 26 02 E7 C1 3D 8B D2 40 3E C5 2E -- 08E220
3E C5 2E FE F4 E9 03 75 C2 0B 02 55 89 05 89 02 -- 08E230
05 8B 02 5C 8E 26 3C 03 26 02 E7 C1 3D 8B D2 40 -- 08E240
7E C5 05 8B 18 7E C5 F8 56 89 F6 46 89 02 55 8B -- 08E250
C4 83 00 64 4E A1 9A 50 01 6A FE 46 89 05 89 F6 -- 08E260
B0 E9 03 75 C2 0B 04 55 89 02 45 89 F6 7E C5 04 -- 08E270
02 75 FF 04 75 FF 18 7E C5 02 75 FF 52 57 56 FE -- 08E280
```

```
FF  D2  40  3E  C5  2E  5E  5F  00  5C  FE  EC  9A  FE  76  FF  --  08E290
01  6A  00  E6  68  00  00  0C  C8  57  56  CB  5E  5F  C9  05  --  08E2A0
C2  0B  FE  56  89  FC  46  89  04  C4  83  00  64  4E  A1  9A  --  08E2B0
28  52  9A  D3  03  68  01  6A  00  6A  00  6A  00  6A  16  75  --  08E2C0
3E  C5  2E  D2  64  36  C4  2E  01  4B  E9  0A  C4  83  00  64  --  08E2D0
66  6A  02  05  C6  02  5C  8E  26  3C  03  26  3D  8B  D2  3C  --  08E2E0
D2  3C  36  C5  2E  D2  60  1E  C4  2E  0A  76  FF  0C  76  FF  --  08E2F0
50  52  02  57  8B  26  07  03  26  66  C7  6B  04  FF  3C  8B  --  08E300
55  8B  4C  45  8B  0E  7E  C5  0A  C4  83  00  5C  ED  6E  9A  --  08E310
FF  FE  76  FF  50  52  00  E6  68  FA  56  89  F8  46  89  4E  --  08E320
10  76  FF  00  8A  68  0A  C4  83  00  5C  ED  6E  9A  FC  76  --  08E330
8A  05  69  D2  44  3E  C5  2E  D2  54  36  C4  2E  0E  76  FF  --  08E340
83  00  5C  ED  6E  9A  50  52  02  54  8B  26  04  03  26  00  --  08E350
89  F4  46  89  02  55  8B  05  8B  D2  54  3E  C5  2E  0A  C4  --  08E360
7E  03  F8  8B  00  8A  04  69  26  D2  44  36  C4  2E  F6  56  --  08E370
4E  55  89  4C  45  89  FE  56  8B  FC  46  8B  F6  5E  8E  F4  --  08E380
3E  C5  2E  D2  50  36  C4  2E  21  75  12  46  0B  14  46  8B  --  08E390
05  C7  02  5C  8E  26  3C  03  26  02  E7  C1  3D  8B  D2  44  --  08E3A0
05  8A  12  7E  C5  01  6A  63  EB  00  00  02  45  C7  00  00  --  08E3B0
50  36  C4  2E  04  C4  83  00  64  4E  A1  9A  50  40  E4  2A  --  08E3C0
8E  26  3C  03  26  02  E7  C1  3D  8B  D2  44  3E  C5  2E  D2  --  08E3D0
57  56  FE  D4  E9  03  75  C2  0B  02  55  89  05  89  02  5C  --  08E3E0
5C  8E  26  3C  03  26  02  E7  C1  3D  8B  D2  44  3E  C5  2E  --  08E3F0
7E  C5  12  76  FF  14  76  FF  35  FF  02  75  FF  02  01  FE  --  08E400
C5  2E  5E  5F  00  5C  FE  EC  9A  50  40  E4  2A  05  8A  12  --  08E410
C7  00  00  02  C8  57  56  CB  5E  5F  C9  05  FF  D2  44  3E  --  08E420
AC  E9  03  75  00  3D  83  D1  EC  3E  C5  2E  00  00  FE  46  --  08E430
68  3E  C5  2E  05  8B  D2  40  3E  C5  2E  00  00  05  C7  01  --  08E440
89  D2  6C  3E  C5  2E  05  8B  D2  44  3E  C5  2E  05  89  D2  --  08E450
D2  70  3E  C5  2E  02  55  8B  05  8B  D2  4C  3E  C5  2E  05  --  08E460
2E  02  55  8B  05  8B  D2  50  3E  C5  2E  02  55  89  05  89  --  08E470

05  8B  D2  48  3E  C5  2E  02  55  89  05  89  D2  74  3E  C5  --  08E480
36  FF  2E  02  55  89  05  89  D2  78  3E  C5  2E  02  55  8B  --  08E490
2E  04  C4  83  00  34  ED  BA  9A  D2  7C  36  FF  2E  D2  7E  --  08E4A0
C4  83  00  34  EE  9B  9A  D2  80  36  FF  2E  D2  82  36  FF  --  08E4B0
C7  D1  E0  3E  C5  2E  00  00  05  C7  D1  DC  3E  C5  2E  04  --  08E4C0
5C  C0  38  9A  50  FE  46  8D  16  0F  6A  57  56  00  00  05  --  08E4D0
FF  D2  10  3E  C5  2E  57  56  00  64  50  E0  9A  5E  5F  00  --  08E4E0
46  8D  16  00  6A  D2  0C  36  FF  2E  D2  0E  36  FF  2E  35  --  08E4F0
05  89  D2  14  3E  C5  2E  5E  5F  00  5C  C0  BA  9A  50  FE  --  08E500
36  FF  2E  22  6A  65  74  00  FE  7E  83  00  64  51  32  9A  --  08E510
36  FF  2E  01  6A  0A  6A  03  6A  D1  FC  36  FF  2E  D1  FE  --  08E520
56  10  C4  83  00  5C  A5  FF  9A  D2  84  36  FF  2E  D2  86  --  08E530
36  FF  2E  D2  0E  36  FF  2E  35  FF  D2  10  3E  C5  2E  57  --  08E540
5E  5F  00  5C  C0  BA  9A  50  FE  46  8D  16  FF  6A  D2  0C  --  08E550
6A  00  6A  13  74  00  FE  7E  83  05  89  D2  14  3E  C5  2E  --  08E560
0A  C4  83  00  64  28  52  9A  FE  76  FF  00  6A  00  6A  00  --  08E570
1C  3E  C5  2E  D2  20  36  FF  2E  D2  22  36  FF  2E  6C  6A  --  08E580
C5  2E  0A  C4  83  00  5C  ED  6E  9A  35  FF  02  75  FF  D2  --  08E590
35  FF  D2  14  3E  C5  2E  57  56  00  01  05  C7  D1  DC  3E  --  08E5A0
9A  9A  50  FE  46  8D  16  00  6A  35  FF  D2  18  3E  C5  2E  --  08E5B0
6A  00  6A  00  6A  13  74  00  FE  7E  83  5E  5F  00  5C  C0  --  08E5C0
C5  2E  0A  C4  83  00  64  28  52  9A  FE  76  FF  00  6A  00  --  08E5D0
5E  5F  C9  00  54  C8  1C  9A  05  75  00  3D  83  D2  24  3E  --  08E5E0
05  0B  02  45  8B  D2  60  3E  C5  2E  EC  8B  55  57  56  CB  --  08E5F0
C4  83  00  64  4E  E3  9A  35  FF  02  75  FF  0D  74  01  FE  --  08E600
02  75  FF  0D  74  05  0B  02  45  8B  D2  64  3E  C5  2E  04  --  08E610
8B  D2  58  3E  C5  2E  04  C4  83  00  64  4E  E3  9A  35  FF  --  08E620
00  64  4E  E3  9A  35  FF  02  75  FF  0D  74  05  0B  02  45  --  08E630
```

627

```
FF  0D  74  05  0B  02  45  8B  D2  5C  3E  C5  2E  04  C4  83  --  08E640
70  3E  C5  2E  04  C4  83  00  64  4E  E3  9A  35  FF  02  75  --  08E650
4E  E3  9A  35  FF  02  75  FF  0D  74  05  0B  02  45  8B  D2  --  08E660
74  05  0B  02  45  8B  D2  78  3E  C5  2E  04  C4  83  00  64  --  08E670
C5  2E  04  C4  83  00  64  4E  E3  9A  35  FF  02  75  FF  0D  --  08E680
9A  35  FF  02  75  FF  0D  74  05  0B  02  45  8B  D2  54  3E  --  08E690
0B  02  45  8B  D2  74  3E  C5  2E  04  C4  83  00  64  4E  E3  --  08E6A0
04  C4  83  00  64  4E  E3  9A  35  FF  02  75  FF  0D  74  05  --  08E6B0
00  6C  27  C4  00  6C  27  BA  00  6C  27  B8  CB  5E  5F  C9  --  08E6C0
00  6C  27  DC  00  6C  27  D8  00  6C  28  50  00  6C  28  06  --  08E6D0
00  6C  28  64  00  6C  28  54  00  6C  28  52  00  6C  28  08  --  08E6E0
00  6C  27  D0  00  6C  27  D2  00  6C  27  BC  00  6C  27  A8  --  08E6F0
00  6C  28  4E  00  6C  27  D4  00  6C  27  CC  00  6C  27  CA  --  08E700
00  6C  28  3E  00  6C  28  04  00  6C  28  2E  00  6C  28  2C  --  08E710
00  6C  27  C8  00  6C  27  C6  00  6C  28  4C  00  6C  28  3F  --  08E720
00  6C  27  FC  00  6C  28  40  00  6C  28  44  00  6C  28  48  --  08E730
00  6C  27  E0  00  6C  27  E4  00  6C  27  F2  00  6C  27  EA  --  08E740
00  6C  28  00  00  6C  27  EE  00  6C  27  FA  00  6C  27  E8  --  08E750
00  6C  27  B0  00  6C  28  1C  00  6C  28  0C  00  6C  27  F6  --  08E760
02  4D  8B  1D  8B  DE  24  3E  C5  2E  00  00  04  C8  57  56  --  08E770
18  FB  81  45  7C  08  7F  00  F9  83  FE  4E  89  FC  5E  89  --  08E780
11  FC  46  01  99  C7  8B  F8  8B  18  0A  46  6B  3F  76  F6  --  08E790
76  F6  18  FC  7E  81  28  7C  09  7F  00  FE  7E  83  FE  56  --  08E7A0
6A  00  6A  00  6A  13  75  00  3D  83  DE  28  3E  C5  2E  21  --  08E7B0
C0  2B  0A  C4  83  00  64  28  52  9A  50  42  68  03  6A  00  --  08E7C0
C7  00  00  42  C8  57  56  CB  5E  5F  C9  00  01  B8  03  EB  --  08E7D0
C5  2E  2F  74  00  3D  83  DE  28  3E  C5  2E  00  01  FA  46  --  08E7E0
9B  DE  30  3E  C5  2E  CE  5E  D9  9B  05  D9  9B  DE  2C  3E  --  08E7F0
DB  E5  9A  50  BE  46  8D  16  D2  5E  D9  9B  05  D9  01  FE  --  08E800
16  02  AD  E9  50  3E  B8  13  74  C0  0B  04  C4  83  00  54  --  08E810

34  3E  C5  2E  04  C4  83  00  5C  F4  34  9A  50  BE  46  8D  --  08E820
00  67  9A  02  8F  E9  C0  2B  05  75  07  6C  3D  05  8B  DE  --  08E830
81  50  7C  08  7F  00  02  7D  83  DE  24  3E  C5  2E  00  1C  --  08E840
89  DE  24  3E  C5  2E  00  34  4C  C1  9A  4A  76  F6  18  3D  --  08E850
7C  08  7F  00  02  7D  83  DE  24  3E  C5  2E  02  55  89  05  --  08E860
74  00  3D  83  DE  28  3E  C5  2E  28  76  F6  18  3D  81  2E  --  08E870
68  03  6A  00  6A  00  6A  00  6A  02  45  E9  50  42  B8  06  --  08E880
2E  02  2D  E9  C0  2B  0A  C4  83  00  64  28  52  9A  50  42  --  08E890
05  8B  DE  3C  3E  C5  2E  21  74  00  3D  83  DE  38  3E  C5  --  08E8A0
1C  08  84  9A  05  EB  00  1C  08  2A  9A  07  75  00  01  3D  --  08E8B0
D2  46  D9  9B  00  6A  00  00  05  C7  DE  38  3E  C5  2E  00  --  08E8C0
4E  9A  00  5C  ED  99  9A  CE  46  D9  9B  00  5C  ED  99  9A  --  08E8D0
2E  01  BE  E9  FE  46  8B  FE  46  89  12  C4  83  00  34  30  --  08E8E0
DE  34  3E  C5  2E  71  7C  07  3A  3D  05  8B  DE  34  3E  C5  --  08E8F0
74  00  3D  83  DE  28  3E  C5  2E  25  75  07  6C  3D  05  8B  --  08E900
68  00  6A  00  6A  00  6A  00  6A  01  B5  E9  50  D0  B8  06  --  08E910
28  3E  C5  2E  40  EB  0A  C4  83  00  64  28  52  9A  50  D0  --  08E920
05  2B  07  6C  B8  DE  34  3E  C5  2E  36  75  00  3D  83  DE  --  08E930
50  E6  46  8D  16  DE  40  36  FF  2E  DE  42  36  FF  2E  50  --  08E940
6A  01  6A  50  E6  46  8D  16  0A  C4  83  00  5C  97  5E  9A  --  08E950
00  FA  7E  83  0A  C4  83  00  64  28  52  9A  50  26  68  00  --  08E960
81  47  7C  08  7F  00  02  7D  83  DE  24  3E  C5  2E  68  74  --  08E970
89  DE  24  3E  C5  2E  00  34  4C  C1  9A  41  76  F2  30  3D  --  08E980
7C  08  7F  00  02  7D  83  DE  24  3E  C5  2E  02  55  89  05  --  08E990
75  00  3D  83  DE  28  3E  C5  2E  33  76  F2  30  3D  81  39  --  08E9A0
64  28  52  9A  50  41  68  00  6A  00  6A  00  6A  00  6A  29  --  08E9B0
99  C6  8B  F0  8B  00  1C  00  4A  9A  14  EB  0A  C4  83  00  --  08E9C0
2E  00  ED  E9  C0  2B  02  55  11  05  01  DE  24  3E  C5  2E  --  08E9D0
E9  50  00  05  FE  46  8B  09  74  00  3D  83  DE  28  3E  C5  --  08E9E0
```

628

```
50 00 05 FE 46 8B 00 6A 00 6A 00 6A 00 6A 00 DA -- 08E9F0
00 00 FA 46 C7 0A C4 83 00 64 28 52 9A 50 01 FE -- 08EA00
9A 50 FC 46 8D 16 0F 74 00 3D 83 DE 44 3E C5 2E -- 08EA10
05 8B DE 34 3E C5 2E 59 EB 04 C4 83 00 1C 00 80 -- 08EA20
8B DE 34 3E C5 2E DE 48 36 C4 2E 40 7E 00 01 3D -- 08EA30
2E 26 74 00 3D 80 02 5C 8E 26 3C 03 26 4F 4F 3D -- 08EA40
26 3C 03 26 4F 3D 8B DE 34 3E C5 2E DE 48 36 C4 -- 08EA50
D5 E7 9A 50 FC 46 8D 16 0D 74 00 3D 80 02 5C 8E -- 08EA60
83 00 54 D5 E7 9A 50 FC 46 8D 16 04 C4 83 00 54 -- 08EA70
83 DE 28 3E C5 2E 44 EB C0 2B 48 EB C0 2B 04 C4 -- 08EA80
05 FE 46 8B 00 6A 00 6A 00 6A 00 6A 17 75 00 3D -- 08EA90
BB 1F EB C0 2B 0A C4 83 00 64 28 52 9A 50 50 00 -- 08EAA0
FF 2E CC 75 F9 E0 07 3B 2E 43 43 00 03 B9 D5 D4 -- 08EAB0
C9 9B D5 9A D4 F5 D4 05 00 3E 00 08 00 00 06 67 -- 08EAC0
3D 83 DE 34 3E C5 2E 00 00 08 C8 57 56 CB 5E 5F -- 08EAD0
00 3D 83 DE 44 3E C5 2E 01 78 E9 C0 2B 05 75 00 -- 08EAE0
04 C4 83 00 1C 00 80 9A 0A 76 FF 0C 76 FF 1C 74 -- 08EAF0
02 9A 01 52 E9 C0 2B 00 01 05 C7 DE 38 3E C5 2E -- 08EB00
2E 6A 9A FA 46 89 05 8B DE 34 3E C5 2E 00 34 43 -- 08EB10
05 8B DE 4C 3E C5 2E 00 E5 E9 03 75 C0 0B 00 34 -- 08EB20
8B DE 4C 3E C5 2E DE 50 36 C4 2E 3E 7E 00 01 3D -- 08EB30
89 05 8B 02 5C 8E 26 3C 03 26 02 E7 C1 4F 4F 3D -- 08EB40
C1 4F 3D 8B DE 4C 3E C5 2E DE 50 36 C4 2E F8 46 -- 08EB50
46 89 F8 46 2B 05 8B 02 5C 8E 26 3C 03 26 02 E7 -- 08EB60
FF 03 EB 00 00 FC 46 C7 00 01 FE 46 C7 05 EB FE -- 08EB70
EB 00 54 D7 79 9A 07 7D FE 46 3B FC 46 8B FC 46 -- 08EB80
43 8A 9A 18 7E 00 01 3D 05 8B DE 34 3E C5 2E EE -- 08EB90
7E C5 07 75 00 01 3D 05 8B DE 4C 3E C5 2E 00 34 -- 08EBA0
2E 48 74 00 3D 83 DE 34 3E C5 2E 00 02 05 C7 0A -- 08EBB0

26 02 E7 C1 4F 3D 8B DE 34 3E C5 2E DE 58 36 C4 -- 08EBC0
C4 2E 00 5C ED 99 9A 05 D9 9B 02 5C 8E 26 3C 03 -- 08EBD0
03 26 02 E7 C1 4F 3D 8B DE 34 3E C5 2E DE 54 36 -- 08EBE0
50 B4 9A 00 5C ED 99 9A 05 D9 9B 02 5C 8E 26 3C -- 08EBF0
29 EB 00 34 30 28 9A 30 EB 10 C4 83 00 34 01 FE -- 08EC00
7E 00 01 3D 05 8B DE 34 3E C5 2E 00 54 D7 79 9A -- 08EC10
00 02 3D 05 8B DE 34 3E C5 2E 00 34 43 8A 9A 18 -- 08EC20
3D 83 DE 5C 3E C5 2E 00 02 05 C7 0A 7E C5 07 75 -- 08EC30
2E 11 74 05 3B FA 46 8B DE 34 3E C5 2E 1D 74 00 -- 08EC40
0D FF DE 4C 3E C5 2E 07 74 00 3D 83 DE 4C 3E C5 -- 08EC50
3E C5 2E 00 00 0C C8 57 56 CB 5E 5F C9 9B C0 2B -- 08EC60
34 3E C5 2E 00 01 F6 46 C7 F4 46 89 05 8B DE 60 -- 08EC70
3D 05 8B DE 34 3E C5 2E 7F 7E 00 01 3D 05 8B DE -- 08EC80
74 00 01 7D 80 3D C5 DE 48 3E C5 2E 20 75 00 02 -- 08EC90
F6 46 C7 5A 74 00 3D 80 3D C5 DE 48 3E C5 2E 66 -- 08ECA0
3D 8B DE 34 3E C5 2E DE 48 36 C4 2E 53 EB 00 00 -- 08ECB0
36 C4 2E 3A 74 00 3D 80 02 5C 8E 26 3C 03 26 4F -- 08ECC0
8E 26 3C 03 26 4F 4F 3D 8B DE 34 3E C5 2E DE 48 -- 08ECD0
34 3E C5 2E DE 48 36 C4 2E 20 75 00 3D 80 02 5C -- 08ECE0
00 3D 80 02 5C 8E 26 3C 03 26 03 EF 83 3D 8B DE -- 08ECF0
4A 88 9A 05 74 00 F6 7E 83 00 00 F6 46 C7 05 75 -- 08ED00
34 3E C5 2E 02 C4 83 00 1C 18 E7 9A 03 6A 00 34 -- 08ED10
DE 34 3E C5 2E 01 2F E9 03 7F 00 01 3D 05 8B DE -- 08ED20
46 C7 05 7D 00 FC 7E 83 FC 46 89 00 04 2D 05 8B -- 08ED30
46 8B 00 00 FA 46 C7 0E 74 00 FC 7E 83 00 00 FC -- 08ED40
00 F8 46 C7 00 01 FA 46 C7 0A EB F8 46 89 48 FC -- 08ED50
36 C4 2E 53 7C 00 02 3D 05 8B DE 34 3E C5 2E 00 -- 08ED60
5C 8E 26 3C 03 26 4F 3D 8B DE 34 3E C5 2E DE 48 -- 08ED70
DE 34 3E C5 2E DE 48 36 C4 2E 33 75 00 3D 80 02 -- 08ED80
19 74 00 3D 80 02 5C 8E 26 3C 03 26 4F 4F 3D 8B -- 08ED90
```

629

```
3C 03 26 4F 3D 8B DE 34 3E C5 2E DE 48 36 C4 2E  --  08EDA0
OD FF DE 34 3E C5 2E 07 EB 01 05 C6 02 5C 8E 26  --  08EDB0
DE 34 3E C5 2E FE 46 FF 03 EB FE 46 89 FC 46 8B  --  08EDC0
26 FE 7E 8B DE 48 36 C4 2E 6E 7D 05 3B FE 46 8B  --  08EDD0
00 1C 08 DE 9A 05 74 00 3D 80 02 5C 8E 26 3C 03  --  08EDE0
05 03 02 E0 C1 F8 46 8B DE 58 3E C5 2E FA 76 FF  --  08EDF0
C1 F8 46 8B DE 54 3E C5 2E 50 52 02 55 8B 01 FE  --  08EE00
C4 83 00 1C 01 97 9A 50 52 02 55 8B 05 03 02 E0  --  08EE10
02 5C 8E 26 3C 03 26 FE 7E 8B DE 48 36 C4 2E 0A  --  08EE20
F8 46 89 FE 46 8B 00 1C 09 BC 9A 05 75 00 3D 80  --  08EE30
C4 83 00 1C 18 E7 9A 01 6A 83 EB 00 00 FA 46 C7  --  08EE40
34 3E C5 2E 22 EB 00 01 05 C7 DE 38 3E C5 2E 02  --  08EE50
9A 00 34 3A 98 9A 00 54 C4 5E 9A 00 00 05 C7 DE  --  08EE60
5F C9 05 89 DE 60 3E C5 2E F4 46 8B 00 1C 19 54  --  08EE70
00 3D 83 DE 44 3E C5 2E 00 00 10 C8 57 56 CB 5E  --  08EE80
2E 04 C4 83 00 1C 00 80 9A 50 F6 46 8D 16 6B 74  --  08EE90
34 3E C5 2E 01 DE E9 03 75 00 3D 83 DE 60 3E C5  --  08EEA0
DE 48 3E C5 2E 01 CF E9 03 7F 00 01 3D 05 8B DE  --  08EEB0
DE 34 36 C4 2E F2 56 89 F0 46 89 02 55 8B 05 8B  --  08EEC0
03 74 02 3D 80 F2 5E 8E F0 7E 03 4F 4F 3C 8B 26  --  08EED0
4F 3D 8B DE 34 3E C5 2E DE 48 36 C4 2E 01 A7 E9  --  08EEE0
2E 6A 9A 01 8D E9 01 05 C6 02 5C 8E 26 3C 03 26  --  08EEF0
C5 2E DE 50 36 C4 2E 49 74 C0 0B F4 46 89 00 34  --  08EF00
5C 8E 26 3C 03 26 02 E7 C1 4F 4F 3D 8B DE 4C 3E  --  08EF10
DE 4C 3E C5 2E DE 50 36 C4 2E F2 46 89 05 8B 02  --  08EF20
2B 05 8B 02 5C 8E 26 3C 03 26 02 E7 C1 4F 3D 8B  --  08EF30
OD FF DE 4C 3E C5 2E 05 29 DE 34 3E C5 2E F2 46  --  08EF40
34 4E 9D 9A 00 34 4A 88 9A 00 34 43 02 9A 05 EB  --  08EF50

DE 34 3E C5 2E 02 C4 83 00 1C 18 E7 9A 03 6A 00  --  08EF60
46 C7 05 7D 00 FC 7E 83 FC 46 89 00 04 2D 05 8B  --  08EF70
46 8B 00 00 FA 46 C7 0E 74 00 FC 7E 83 00 00 FC  --  08EF80
00 F8 46 C7 00 01 FA 46 C7 0A EB F8 46 89 48 FC  --  08EF90
34 3E C5 2E FE 46 FF 03 EB FE 46 89 FC 46 8B 00  --  08EFA0
FE 7E 8B DE 48 36 C4 2E 6E 7D 05 3B FE 46 8B DE  --  08EFB0
1C 08 DE 9A 05 74 00 3D 80 02 5C 8E 26 3C 03 26  --  08EFC0
03 02 E0 C1 F8 46 8B DE 58 3E C5 2E FA 76 FF 00  --  08EFD0
E0 C1 F8 46 8B DE 54 3E C5 2E 50 52 02 55 8B 05  --  08EFE0
0A C4 83 00 1C 01 97 9A 50 52 02 55 8B 05 03 02  --  08EFF0
5C 8E 26 3C 03 26 FE 7E 8B DE 48 36 C4 2E 01 FE  --  08F000
46 89 FE 46 8B 00 1C 09 BC 9A 05 75 00 3D 80 02  --  08F010
83 00 1C 18 E7 9A 01 6A 83 EB 00 00 FA 46 C7 F8  --  08F020
00 34 43 8A 9A 00 01 05 C7 DE 38 3E C5 2E 02 C4  --  08F030
DE 34 3E C5 2E DE 58 36 C4 2E 46 74 00 F4 7E 83  --  08F040
05 D9 9B 02 5C 8E 26 3C 03 26 02 E7 C1 4F 3D 8B  --  08F050
8B DE 34 3E C5 2E DE 54 36 C4 2E 00 5C ED 99 9A  --  08F060
9A 05 D9 9B 02 5C 8E 26 3C 03 26 02 E7 C1 4F 3D  --  08F070
5E 5F C9 9B 10 C4 83 00 34 50 B4 9A 00 5C ED 99  --  08F080
75 00 3D 83 DE 28 3E C5 2E 00 00 02 C8 57 56 CB  --  08F090
64 28 52 9A 50 08 68 00 6A 00 6A 00 6A 00 6A 13  --  08F0A0
C4 83 00 54 D5 E7 9A 50 FE 46 8D 16 0A C4 83 00  --  08F0B0
BC 9A 04 C4 83 00 54 D5 E7 9A 50 FE 46 8D 16 04  --  08F0C0
3E C5 2E 00 00 1A C8 57 56 CB 5E 5F C9 00 1C 09  --  08F0D0
3E C5 2E FC 56 89 FA 46 89 02 55 8B 05 8B DE 54  --  08F0E0
FE 46 C7 F8 56 89 F6 46 89 02 55 8B 05 8B DE 58  --  08F0F0
2E 04 F6 46 83 04 FA 46 83 FE 46 FF 0B EB 00 00  --  08F100
D9 9B 00 A4 E9 03 7C 05 3B FE 46 8B DE 34 3E C5  --  08F110
26 9B 05 D9 9B FA 7E C5 0A 76 C4 EE 5E DD 9B EE  --  08F120
76 C4 10 76 00 5C ED 94 9A EE 5E DC 9B 10 64 D8  --  08F130
76 C4 11 EB 10 64 D8 26 9B 05 D9 9B FA 7E C5 0A  --  08F140
```

630

```
9B EO D9 9B 10 64 D8 26 9B 05 D9 9B FA 7E C5 0A -- 08F150
9B EE D9 9B 98 73 00 5C ED 94 9A DE 64 1E DC 2E -- 08F160
64 D8 26 9B 05 D9 9B F6 7E C5 0A 76 C4 E6 5E DD -- 08F170
C5 0A 76 C4 10 76 00 5C ED 94 9A E6 5E DC 9B 14 -- 08F180
C5 0A 76 C4 11 EB 14 64 D8 26 9B 05 D9 9B F6 7E -- 08F190
DC 2E 9B EO D9 9B 14 64 D8 26 9B 05 D9 9B F6 7E -- 08F1A0
00 01 B8 FF 47 E9 03 72 00 5C ED 94 9A DE 64 1E -- 08F1B0
C7 00 00 10 C8 57 56 CB 5E 5F C9 9B CO 2B 02 EB -- 08F1C0
6A 03 6A 00 01 05 C7 DE 28 3E C5 2E 00 00 FO 46 -- 08F1D0
00 00 9A 08 C4 83 00 54 BA 52 9A 03 6A 09 6A 00 -- 08F1E0
38 3E C5 2E 00 1C 08 84 9A 00 1C 19 54 9A 00 1C -- 08F1F0
C4 83 00 1C 18 E7 9A 01 6A 00 00 05 C7 DE 01 FE -- 08F200
00 34 3A 98 9A 00 54 C3 E8 9A 00 34 4A 2B 9A 02 -- 08F210
56 89 FC 46 89 10 56 8B 0E 46 8B 00 34 42 FO 9A -- 08F220
16 46 8B FA 56 89 F8 46 89 14 56 8B 12 46 8B FE -- 08F230
0E EB 00 00 F2 46 C7 F6 56 89 F4 46 89 18 56 8B -- 08F240
7E C5 16 46 FF 04 12 46 83 04 0E 46 83 F2 46 FF -- 08F250
74 00 3D 80 16 7E C5 44 7D 46 45 3B F2 46 8B 0A -- 08F260
2C 3E C5 2E 05 D9 9B 0E 7E C5 00 1C 08 2A 9A 05 -- 08F270
9B DE 30 3E C5 2E 05 D9 9B 12 7E C5 1D D9 9B DE -- 08F280
7E C5 OF 75 CO 0B FO 46 89 00 54 D2 F1 9A 1D D9 -- 08F290
FO 7E 83 A3 EB 00 1C 08 84 9A AA 75 00 3D 80 16 -- 08F2A0
FO 46 89 00 34 50 A4 9A 00 34 3B 2F 9A 0D 75 00 -- 08F2B0
C7 DE 28 3E C5 2E 00 34 3A 98 9A 00 54 C3 E8 9A -- 08F2C0
05 0A 46 8B 0C 76 FF 36 75 00 FO 7E 83 00 00 05 -- 08F2D0
C5 00 6A 50 00 34 05 0A 46 8B 0C 76 FF 50 00 08 -- 08F2E0
76 FF FA 76 FF F4 76 FF F6 76 FF 46 75 FF 0A 7E -- 08F2F0

8B 18 C4 83 00 1C 4E 45 9A FC 76 FF FE 76 FF F8 -- 08F300
00 3C ED 68 00 6C 33 D6 00 CB 5E 5F C9 9B FO 46 -- 08F310
00 3C ED 74 00 3C ED 70 00 3C FO F8 00 3C FO F4 -- 08F320
00 3C FO EC 00 3C ED 72 00 6C 33 D2 00 3C ED 76 -- 08F330
00 3C FO FO 00 3C ED 64 00 3C ED 5E 00 3C ED 6E -- 08F340
3F 50 62 4D D2 F1 A9 FC 00 3C ED 6A 00 3C ED 7C -- 08F350
2E 12 7E 00 3D 83 E9 72 3E C5 2E EC 8B 55 57 56 -- 08F360
C4 83 00 5C 97 1E 9A E9 76 36 FF 2E E9 78 36 FF -- 08F370
C5 2E 00 B4 E9 03 75 00 3D 83 E9 7A 3E C5 2E 04 -- 08F380
00 3D 83 E9 72 3E C5 2E 22 74 00 3D 83 E9 7E 3E -- 08F390
5C 97 1E 9A E9 82 36 FF 2E E9 84 36 FF 2E 12 7E -- 08F3A0
C7 E9 7E 3E C5 2E 00 A6 E9 00 01 B8 04 C4 83 00 -- 08F3B0
36 FF 2E 12 7E 00 3D 83 E9 72 3E C5 2E 00 01 05 -- 08F3C0
2E 04 C4 83 00 5C 97 1E 9A E9 86 36 FF 2E E9 88 -- 08F3D0
C4 83 00 14 F4 F5 9A E9 8A 36 FF 2E E9 8C 36 FF -- 08F3E0
E9 90 36 FF 2E 12 7E 00 3D 83 E9 72 3E C5 2E 04 -- 08F3F0
56 04 C4 83 00 5C 97 1E 9A E9 8E 36 FF 2E 01 FE -- 08F400
00 9C 68 00 6A E9 92 36 FF 2E E9 94 36 FF 2E 57 -- 08F410
01 08 45 C7 E9 92 3E C5 2E 5E 5F 00 8C 00 02 9A -- 08F420
9A 00 06 12 45 C7 00 00 0A 45 C7 00 01 05 C7 00 -- 08F430
FF 2E 12 7E 00 3D 83 E9 72 3E C5 2E 00 54 DF 70 -- 08F440
04 C4 83 00 5C 97 1E 9A E9 96 36 FF 2E E9 98 36 -- 08F450
FF 7C 86 C6 00 00 84 C8 57 56 CB 5E 5F C9 CO 2B -- 08F460
6E FF 7F 86 C6 69 FF 7E 86 C6 6F FF 7D 86 C6 50 -- 08F470
20 83 46 C6 20 82 46 C6 3A 81 46 C6 74 80 46 C6 -- 08F480
20 87 46 C6 20 86 46 C6 20 85 46 C6 20 84 46 C6 -- 08F490
20 8B 46 C6 20 8A 46 C6 66 89 46 C6 6F 88 46 C6 -- 08F4A0
20 8F 46 C6 20 8E 46 C6 20 8D 46 C6 20 8C 46 C6 -- 08F4B0
20 93 46 C6 20 92 46 C6 00 91 46 C6 20 90 46 C6 -- 08F4C0
20 97 46 C6 20 96 46 C6 20 95 46 C6 20 94 46 C6 -- 08F4D0
20 9B 46 C6 20 9A 46 C6 43 99 46 C6 20 98 46 C6 -- 08F4E0
20 9F 46 C6 20 9E 46 C6 4D 9D 46 C6 20 9C 46 C6 -- 08F4F0
```

```
20 A3 46 C6 20 A2 46 C6 59 A1 46 C6 20 A0 46 C6 -- 08F500
00 A7 46 C6 20 A6 46 C6 42 A5 46 C6 20 A4 46 C6 -- 08F510
6F AB 46 C6 66 AA 46 C6 65 A9 46 C6 42 A8 46 C6 -- 08F520
20 AF 46 C6 20 AE 46 C6 65 AD 46 C6 72 AC 46 C6 -- 08F530
20 B3 46 C6 20 B2 46 C6 20 B1 46 C6 20 B0 46 C6 -- 08F540
20 B7 46 C6 20 B6 46 C6 20 B5 46 C6 20 B4 46 C6 -- 08F550
20 BB 46 C6 20 BA 46 C6 20 B9 46 C6 20 B8 46 C6 -- 08F560
66 BF 46 C6 41 BE 46 C6 00 BD 46 C6 20 BC 46 C6 -- 08F570
20 C3 46 C6 72 C2 46 C6 65 C1 46 C6 74 C0 46 C6 -- 08F580
20 C7 46 C6 20 C6 46 C6 20 C5 46 C6 20 C4 46 C6 -- 08F590
20 CB 46 C6 20 CA 46 C6 20 C9 46 C6 20 C8 46 C6 -- 08F5A0
20 CF 46 C6 20 CE 46 C6 20 CD 46 C6 20 CC 46 C6 -- 08F5B0
00 D3 46 C6 20 D2 46 C6 20 D1 46 C6 20 D0 46 C6 -- 08F5C0
20 D7 46 C6 20 D6 46 C6 20 D5 46 C6 20 D4 46 C6 -- 08F5D0
20 DB 46 C6 20 DA 46 C6 20 D9 46 C6 20 D8 46 C6 -- 08F5E0
20 DF 46 C6 20 DE 46 C6 20 DD 46 C6 20 DC 46 C6 -- 08F5F0
46 C6 20 E2 46 C6 20 E1 46 C6 20 E0 46 C6 01 FE -- 08F600
46 C6 20 E6 46 C6 20 E5 46 C6 20 E4 46 C6 20 E3 -- 08F610
46 C6 52 EA 46 C6 00 E9 46 C6 20 E8 46 C6 20 E7 -- 08F620
46 C6 65 EE 46 C6 67 ED 46 C6 6E EC 46 C6 61 EB -- 08F630
46 C6 20 F2 46 C6 20 F1 46 C6 20 F0 46 C6 3A EF -- 08F640
46 C6 20 F6 46 C6 20 F5 46 C6 20 F4 46 C6 20 F3 -- 08F650
46 C6 20 FA 46 C6 20 F9 46 C6 20 F8 46 C6 20 F7 -- 08F660
46 C6 20 FE 46 C6 20 FD 46 C6 20 FC 46 C6 20 FB -- 08F670
9C 36 FF 2E 12 7E 00 3D 83 E9 72 3E C5 2E 00 FF -- 08F680
C5 2E 04 C4 83 00 5C 97 1E 9A E9 9A 36 FF 2E E9 -- 08F690

00 3D 83 E9 7E 3E C5 2E 5B 74 00 3D 83 E9 7A 3E -- 08F6A0
A0 36 FF 2E 12 7E 00 3D 83 E9 72 3E C5 2E 21 75 -- 08F6B0
01 B8 04 C4 83 00 5C 97 1E 9A E9 9E 36 FF 2E E9 -- 08F6C0
16 01 6A E9 92 36 FF 2E E9 94 36 FF 2E 32 EB 00 -- 08F6D0
14 F5 9B 9A 35 FF E9 8A 3E C5 2E 50 FF 7C 86 8D -- 08F6E0
00 14 FA 45 9A 35 FF E9 8A 3E C5 2E 0C C4 83 00 -- 08F6F0
2E 00 00 12 C8 57 56 CB 5E 5F C9 C0 2B 02 C4 83 -- 08F700
FF 2E E9 A4 36 FF 2E 12 7E 00 3D 83 E9 72 3E C5 -- 08F710
E9 7A 3E C5 2E 04 C4 83 00 5C 97 1E 9A E9 A2 36 -- 08F720
3D 05 8B E9 A6 3E C5 2E 03 A3 E9 03 75 00 3D 83 -- 08F730
C5 2E 29 7E 04 3B 26 E9 AA 36 C4 2E 0A 7C 00 01 -- 08F740
2E 35 FF E9 A6 3E C5 2E 19 7E 00 3D 83 E9 72 3E -- 08F750
C4 83 00 5C 97 1E 9A E9 AE 36 FF 2E E9 B0 36 FF -- 08F760
04 EE 7E 83 00 00 EE 46 C7 03 66 E9 FF FF B8 06 -- 08F770
1E C1 6B 49 0D 8B E9 A6 3E C5 2E 00 B9 E9 03 7C -- 08F780
B4 1E 8E 2E E9 B2 3E 03 2E E7 D1 EE 7E 8B F0 8B -- 08F790
89 1F 16 FD 03 E7 D1 EE 7E 8B 02 45 8B FE 03 E9 -- 08F7A0
8B F0 8B 1E C1 6B 49 0D 8B E9 A6 3E C5 2E F8 45 -- 08F7B0
DE 03 E9 B4 06 8E 2E E9 B2 1E 03 2E E3 D1 EE 5E -- 08F7C0
3E 03 2E E7 D1 EE 7E 8B F0 8B 1E C1 6B 49 0D 8B -- 08F7D0
0A 47 03 26 02 45 8B FE 03 E9 B4 1E 8E 2E E9 B2 -- 08F7E0
D1 EE 7E 8B F0 45 89 1F 16 FD 03 E7 D1 EE 7E 8B -- 08F7F0
EE 7E 8B 0E 7D 00 F0 7D 83 1F 16 FD 03 E7 01 FE -- 08F800
E7 D1 EE 7E 8B 00 00 F0 45 C7 1F 16 FD 03 E7 D1 -- 08F810
D1 EE 7E 8B 0E 7E 00 FF 3D F0 45 8B 1F 16 FD 03 -- 08F820
FF 3E E9 EE 46 FF 00 FF F0 45 C7 1F 16 FD 03 E7 -- 08F830
8B E9 A6 36 C5 2E 4A 7E 00 3D 83 E9 72 3E C5 2E -- 08F840
B4 1E 8E 2E E9 B2 3E 03 2E F8 8B 1E C7 6B 4F 3C -- 08F850
FF FC 76 FF F4 76 FF FE 76 FF F6 76 FF 35 FF E9 -- 08F860
E9 A6 3E C5 2E F8 76 FF F0 76 FF FA 76 FF F2 76 -- 08F870
5C 97 1E 9A E9 B6 36 FF 2E E9 B8 36 FF 2E 35 FF -- 08F880
46 C7 4D 75 00 3D 83 E9 BA 3E C5 2E 18 C4 83 00 -- 08F890
D1 EE 7E 8B 00 DE E9 03 7C 04 EE 7E 83 00 00 EE -- 08F8A0
```

632

```
3E 03 2E E7 D1 EE 7E 8B F8 45 8B 1F 16 FD 03 E7 -- 08F8B0
FD 03 E7 D1 EE 7E 8B 05 89 E9 C0 1E 8E 2E E9 BE -- 08F8C0
2E E9 C2 3E 03 2E E7 D1 EE 7E 8B F0 45 8B 1F 16 -- 08F8D0
E9 BA 3E C5 2E B8 EB EE 46 FF 05 89 E9 C4 1E 8E -- 08F8E0
83 00 00 EE 46 C7 00 90 E9 03 74 00 01 3D 05 8B -- 08F8F0
16 F5 03 E6 D1 EE 76 8B 00 82 E9 03 7C 04 EE 7E -- 08F900
36 DC 2E 9B F8 64 DE 26 9B E9 C6 06 DD 2E 9B 07 -- 08F910
ED F9 9A 00 5C ED 99 9A E9 D6 06 DC 2E 9B E9 CE -- 08F920
2E E9 BE 3E 03 2E E7 D1 EE 7E 8B 08 C4 83 00 5C -- 08F930
9B 07 16 F5 03 E6 D1 EE 76 8B 05 89 E9 C0 1E 8E -- 08F940
E9 CE 36 DC 2E 9B F0 64 DE 26 9B E9 C6 06 DD 2E -- 08F950
00 5C ED F9 9A 00 5C ED 99 9A E9 D6 06 DC 2E 9B -- 08F960
1E 8E 2E E9 C2 3E 03 2E E7 D1 EE 7E 8B 08 C4 83 -- 08F970
FF E9 AA 3E C5 2E FF 75 E9 EE 46 FF 05 89 E9 C4 -- 08F980
36 FF 2E E9 E4 36 FF 2E 35 FF E9 A6 3E C5 2E 35 -- 08F990
5C 97 5E 9A E9 DE 36 FF 2E E9 E0 36 FF 2E E9 E2 -- 08F9A0
FF 2E E9 E6 36 FF 2E E9 E8 36 FF 2E 0C C4 83 00 -- 08F9B0
5C 97 5E 9A 50 00 16 05 E9 DE 06 8B 2E E9 E0 36 -- 08F9C0
FF 04 75 FF 06 75 FF E9 BE 3E C5 2E 08 C4 83 00 -- 08F9D0
FF 2E E9 EA 36 FF 2E E9 EC 36 FF 2E 35 FF 02 75 -- 08F9E0
5C 97 5E 9A 50 00 2C 05 E9 DE 06 8B 2E E9 E0 36 -- 08F9F0
75 FF 06 75 FF E9 C2 3E C5 2E 10 C4 83 00 01 FE -- 08FA00
E9 EE 36 FF 2E E9 F0 36 FF 2E 35 FF 02 75 FF 04 -- 08FA10
5E 9A 50 00 42 05 E9 DE 06 8B 2E E9 E0 36 FF 2E -- 08FA20
E9 F2 36 FF 2E E9 F4 36 FF 2E 10 C4 83 00 5C 97 -- 08FA30

5E 9A 50 00 58 05 E9 DE 06 8B 2E E9 E0 36 FF 2E -- 08FA40
C7 6B 4F 3C 8B E9 A6 36 C5 2E 08 C4 83 00 5C 97 -- 08FA50
2E 35 FF E9 B4 1E 8E 2E E9 B2 3E 03 2E F8 8B 1E -- 08FA60
8B 2E E9 E0 36 FF 2E E9 F6 36 FF 2E E9 F8 36 FF -- 08FA70
2E 0A C4 83 00 5C 97 5E 9A 50 00 6E 05 E9 DE 06 -- 08FA80
E9 E0 36 FF 2E 01 6A E9 92 36 FF 2E E9 94 36 FF -- 08FA90
14 F5 9B 9A 35 FF E9 8A 3E C5 2E E9 DE 36 FF 2E -- 08FAA0
00 14 FA 45 9A 35 FF E9 8A 3E C5 2E 0C C4 83 00 -- 08FAB0
36 FF 2E 12 7E 00 3D 83 E9 72 3E C5 2E 02 C4 83 -- 08FAC0
2B 04 C4 83 00 5C 97 1E 9A E9 FA 36 FF 2E E9 FC -- 08FAD0
E9 72 3E C5 2E EC 8B 55 57 56 CB 5E 5F C9 9B C0 -- 08FAE0
9A E9 FE 36 FF 2E EA 00 36 FF 2E 12 7E 00 3D 83 -- 08FAF0
74 00 3D 83 E9 7A 3E C5 2E 04 C4 83 00 5C 97 1E -- 08FB00
E9 72 3E C5 2E 1E 75 00 3D 83 E9 7E 3E C5 2E 61 -- 08FB10
9A EA 02 36 FF 2E EA 04 36 FF 2E 2C 7E 00 3D 83 -- 08FB20
35 FF E9 8A 3E C5 2E 18 EB 04 C4 83 00 5C 97 1E -- 08FB30
00 05 C7 E9 7E 3E C5 2E 02 C4 83 00 14 F8 4D 9A -- 08FB40
12 7E 00 3D 83 E9 72 3E C5 2E 00 54 A0 E0 9A 00 -- 08FB50
83 00 5C 97 1E 9A EA 06 36 FF 2E EA 08 36 FF 2E -- 08FB60
3E C5 2E EC 8B 55 57 56 CB 5E 5F C9 C0 2B 04 C4 -- 08FB70
0A 36 FF 2E EA 0C 36 FF 2E 12 7E 00 3D 83 E9 72 -- 08FB80
3D 83 E9 7A 3E C5 2E 04 C4 83 00 5C 97 1E 9A EA -- 08FB90
29 75 00 3D 83 E9 7E 3E C5 2E 00 C1 E9 03 75 00 -- 08FBA0
2E EA 10 36 FF 2E 12 7E 00 3D 83 E9 72 3E C5 2E -- 08FBB0
C7 0A 7E C5 04 C4 83 00 5C 97 1E 9A EA 0E 36 FF -- 08FBC0
0D FF E9 A6 3E C5 2E 00 90 E9 00 01 B8 00 01 05 -- 08FBD0
7E 04 3B 26 E9 AA 36 C4 2E 0A 7C 00 01 3D 05 8B -- 08FBE0
E9 A6 3E C5 2E 00 54 E2 11 9A 73 EB FF FF B8 05 -- 08FBF0
05 8B E9 AA 3E C5 2E 1E 75 00 01 3D 05 8B 01 FE -- 08FC00
7E C5 2A EB 00 01 05 C7 0A 7E C5 09 75 00 01 3D -- 08FC10
A6 3E C5 2E E9 AA 36 C4 2E 21 EB 00 03 05 C7 0A -- 08FC20
EB 00 02 05 C7 0A 7E C5 09 75 04 3B 26 05 8B E9 -- 08FC30
00 3D 83 E9 72 3E C5 2E 00 04 05 C7 0A 7E C5 07 -- 08FC40
12 36 FF 2E EA 14 36 FF 2E 35 FF 0A 7E C5 17 7E -- 08FC50
```

633

```
56 CB 5E 5F C9 C0 2B 06 C4 83 00 5C 97 1E 9A EA -- 08FC60
FF 2E 12 7E 00 3D 83 E9 72 3E C5 2E EC 8B 55 57 -- 08FC70
04 C4 83 00 5C 97 1E 9A EA 16 36 FF 2E EA 18 36 -- 08FC80
3E C5 2E 00 D7 E9 03 75 00 3D 83 E9 7A 3E C5 2E -- 08FC90
7E 00 3D 83 E9 72 3E C5 2E 29 75 00 3D 83 E9 7E -- 08FCA0
00 5C 97 1E 9A EA 1A 36 FF 2E EA 1C 36 FF 2E 12 -- 08FCB0
00 A6 E9 00 01 B8 00 01 05 C7 0A 7E C5 04 C4 83 -- 08FCC0
EB EA 22 3E C5 2E 07 74 00 3D 83 EA 1E 3E C5 2E -- 08FCD0
3D 05 89 E9 A6 3E C5 2E 05 8B E9 AA 3E C5 2E 05 -- 08FCE0
FF B8 05 7E 04 3B 26 E9 AA 36 C4 2E 0A 7C 00 01 -- 08FCF0
3D 05 8B E9 A6 3E C5 2E 00 54 E2 11 9A 73 EB FF -- 08FD00
09 75 00 01 3D 05 8B E9 AA 3E C5 2E 1E 75 00 01 -- 08FD10
00 03 05 C7 0A 7E C5 2A EB 00 01 05 C7 0A 7E C5 -- 08FD20
3B 26 05 8B E9 A6 3E C5 2E E9 AA 36 C4 2E 21 EB -- 08FD30
C7 0A 7E C5 07 EB 00 02 05 C7 0A 7E C5 09 75 04 -- 08FD40
0A 7E C5 17 7E 00 3D 83 E9 72 3E C5 2E 00 04 05 -- 08FD50
5C 97 1E 9A EA 26 36 FF 2E EA 28 36 FF 2E 35 FF -- 08FD60
2E EC 8B 55 57 56 CB 5E 5F C9 C0 2B 06 C4 83 00 -- 08FD70
FF 2E EA 2C 36 FF 2E 12 7E 00 3D 83 E9 72 3E C5 -- 08FD80
E9 7A 3E C5 2E 04 C4 83 00 5C 97 1E 9A EA 2A 36 -- 08FD90
00 3D 83 E9 7E 3E C5 2E 00 C1 E9 03 75 00 3D 83 -- 08FDA0
30 36 FF 2E 12 7E 00 3D 83 E9 72 3E C5 2E 29 75 -- 08FDB0
7E C5 04 C4 83 00 5C 97 1E 9A EA 2E 36 FF 2E EA -- 08FDC0
E9 A6 3E C5 2E 00 90 E9 00 01 B8 00 01 05 C7 0A -- 08FDD0

3B 26 E9 AA 36 C4 2E 0A 7C 00 01 3D 05 8B 05 FF -- 08FDE0
3E C5 2E 00 54 E2 11 9A 73 EB FF FF B8 05 7E 04 -- 08FDF0
E9 AA 3E C5 2E 1E 75 00 01 3D 05 8B E9 A6 01 FE -- 08FE00
2A EB 00 01 05 C7 0A 7E C5 09 75 00 01 3D 05 8B -- 08FE10
C5 2E E9 AA 36 C4 2E 21 EB 00 03 05 C7 0A 7E C5 -- 08FE20
02 05 C7 0A 7E C5 09 75 04 3B 26 05 8B E9 A6 3E -- 08FE30
83 E9 72 3E C5 2E 00 04 05 C7 0A 7E C5 07 EB 00 -- 08FE40
FF 2E EA 34 36 FF 2E 35 FF 0A 7E C5 17 7E 00 3D -- 08FE50
5E 5F C9 C0 2B 06 C4 83 00 5C 97 1E 9A EA 32 36 -- 08FE60
E5 CA 00 24 31 48 00 3C E1 AA 00 24 31 54 00 CB -- 08FE70
E2 0C 00 3C E5 CE 00 3C E1 F2 00 3C E1 C1 00 3C -- 08FE80
E2 48 00 3C E2 28 00 3C E2 1B 00 3C E6 54 00 3C -- 08FE90
E2 8C 00 24 31 32 00 3C E5 CC 00 3C E2 79 00 3C -- 08FEA0
E6 F0 00 24 F4 8E 00 3C E2 CF 00 24 31 AC 00 3C -- 08FEB0
66 66 40 6F E0 00 00 00 00 00 00 3C E6 F8 00 3C -- 08FEC0
E5 D0 3F E0 00 00 00 00 00 40 04 66 66 66 66 -- 08FED0
E3 69 00 3C E3 53 00 3C E3 3D 00 3C E3 23 00 3C -- 08FEE0
E3 B9 00 3C E3 AC 00 3C E3 95 00 3C E3 D5 00 3C -- 08FEF0
E4 47 00 3C E4 29 00 3C E3 FC 00 3C E3 D5 00 3C -- 08FF00
31 A2 00 3C E4 D2 00 3C E4 B4 00 3C E4 78 00 3C -- 08FF10
E5 5D 00 3C E5 3F 00 3C E5 03 00 24 31 A4 00 24 -- 08FF20
F5 06 3E C5 2E EC 8B 55 57 56 00 3C E5 8E 00 3C -- 08FF30
75 00 03 3D 05 8B F5 0A 3E C5 2E 17 74 00 3D 83 -- 08FF40
0E 3E C5 2E 09 EB 00 03 05 C7 F5 0E 3E C5 2E 0B -- 08FF50
57 56 CB 5E 5F C9 00 54 EB 35 9A 00 02 05 C7 F5 -- 08FF60
00 01 B8 05 75 00 3D 83 F5 12 3E C5 2E EC 8B 55 -- 08FF70
46 C7 00 00 06 C8 57 56 CB 5E 5F C9 C0 2B 02 EB -- 08FF80
36 FF 2E F5 18 36 FF 2E 50 FE 46 8D 16 00 00 FE -- 08FF90
64 40 D0 9A 02 C1 68 06 6A 00 6A 00 FF 68 F5 16 -- 08FFA0
00 FC 46 C6 FF FB 46 C6 FF FA 46 C6 10 C4 83 00 -- 08FFB0
00 6A 50 FA 46 8D 16 50 FE 46 8D 16 00 FD 46 C6 -- 08FFC0
C9 10 C4 83 00 64 40 D0 9A 01 32 68 06 6A 00 6A -- 08FFD0
46 C6 00 00 FE 46 C7 00 00 06 C8 57 56 CB 5E 5F -- 08FFE0
C5 2E FB 46 88 E4 2A 05 8A F5 16 3E C5 2E FF FA -- 08FFF0
1E 3E C5 2E FC 46 88 E4 2A 05 8A F5 1A 3E 01 FE -- 090000
```

```
46 8D 16 50 FE 46 8D 16 FD 46 88 E4 2A 05 8A F5 -- 090010
00 64 40 D0 9A 01 32 68 06 6A 00 6A 00 6A 50 FA -- 090020
FE 46 C7 00 00 0E C8 57 56 CB 5E 5F C9 10 C4 83 -- 090030
F5 0E 3E C5 2E 00 00 05 C7 F5 12 3E C5 2E 00 00 -- 090040
2E F5 28 36 FF 2E 00 E6 68 4D 75 00 02 3D 05 8B -- 090050
6E 9A F5 22 36 FF 2E F5 24 36 FF 2E F5 26 36 FF -- 090060
D9 9B F5 2A 3E C5 2E EE D9 9B 0A C4 83 00 5C ED -- 090070
36 3E C5 2E 1D D9 9B F5 2E 3E C5 2E EE D9 9B 1D -- 090080
3E 3E C5 2E 1D D9 9B F5 32 3E C5 2E 05 D9 9B F5 -- 090090
2E F5 4C 36 FF 2E 01 6A FF 6A 12 6A 00 EA E9 F5 -- 0900A0
FD 9A F5 46 36 FF 2E F5 48 36 FF 2E F5 4A 36 FF -- 0900B0
36 FF 2E F5 44 36 FF 2E 50 52 0C C4 83 00 5C 93 -- 0900C0
83 F5 4E 3E C5 2E 0A C4 83 00 5C ED 6E 9A F5 42 -- 0900D0
64 28 52 9A 35 FF 04 6A 00 6A 00 6A 10 74 00 3D -- 0900E0
C5 2E 02 55 8B 05 8B F5 42 3E C5 2E 08 C4 83 00 -- 0900F0
36 FF 2E 50 FE 46 8D 16 02 55 89 05 89 F5 52 3E -- 090100
83 00 54 F6 E3 9A 35 FF 52 F5 22 36 FF 2E F5 24 -- 090110
76 FF 04 6A 00 6A 00 6A 11 74 00 FE 7E 83 0C C4 -- 090120
FF 2E F5 44 36 FF 2E 08 C4 83 00 64 28 52 9A FE -- 090130
7E 83 FE 46 89 04 C4 83 00 5C 94 D5 9A F5 42 36 -- 090140
00 64 28 52 9A 50 04 6A 00 6A 00 6A 0F 74 00 FE -- 090150
D9 9B 1D D9 9B F5 2A 3E C5 2E EE D9 9B 08 C4 83 -- 090160
D9 9B F5 56 3E C5 2E 1D D9 9B F5 2E 3E C5 2E EE -- 090170

D9 9B F5 5A 3E C5 2E 1D D9 9B F5 32 3E C5 2E 05 -- 090180
05 C7 F5 5E 3E C5 2E 1D D9 9B F5 3A 3E C5 2E 05 -- 090190
C5 2E 05 8B 3C 74 00 3D 83 F5 62 3E C5 2E 00 00 -- 0901A0
2E F5 2C 36 FF 2E 50 FE 46 8D 16 05 89 F5 5E 3E -- 0901B0
C4 83 00 64 40 D0 9A 01 F8 68 04 6A F5 2A 36 FF -- 0901C0
FE 76 FF 04 6A 00 6A 00 6A 11 74 00 FE 7E 83 0C -- 0901D0
16 05 C6 F5 66 3E C5 2E 08 C4 83 00 64 28 52 9A -- 0901E0
6A 05 6A 01 6A 57 F5 68 36 FF 2E 50 FE 46 8D 16 -- 0901F0
74 00 FE 7E 83 0E C4 83 00 64 40 D0 9A 6E 01 FE -- 090200
83 00 64 28 52 9A FE 76 FF 04 6A 00 6A 00 6A 11 -- 090210
05 8B 05 FF F5 6A 3E C5 2E 50 FE 46 8D 16 08 C4 -- 090220
7E 83 0A C4 83 00 64 40 D0 9A 01 F5 68 03 6A 50 -- 090230
28 52 9A FE 76 FF 04 6A 00 6A 00 6A 11 74 00 FE -- 090240
62 3E C5 2E 05 8B F5 6A 3E C5 2E 08 C4 83 00 64 -- 090250
C6 70 75 00 04 3D 05 8B F5 6E 3E C5 2E 05 89 F5 -- 090260
16 FF F4 46 C6 00 F5 46 C6 00 F2 46 C6 FF F3 46 -- 090270
4C 68 05 6A F2 76 FF F4 76 FF 02 6A 50 FE 46 8D -- 090280
6A 13 74 00 FE 7E 83 0E C4 83 00 64 40 D0 9A 01 -- 090290
83 00 64 28 52 9A FE 76 FF 00 6A 00 6A 00 6A 00 -- 0902A0
34 ED BA 9A F5 72 36 FF 2E F5 74 36 FF 2E 0A C4 -- 0902B0
2E 00 02 B8 00 05 C6 F5 76 3E C5 2E 04 C4 83 00 -- 0902C0
2E 05 88 F5 7A 3E C5 2E E4 2A 05 88 F5 7E 3E C5 -- 0902D0
86 3E C5 2E 01 02 E9 03 75 00 3D 83 F5 82 3E C5 -- 0902E0
3E C5 2E 05 DD 9B F5 92 3E C5 2E 00 01 05 C7 F5 -- 0902F0
3E C5 2E 1D D9 9B F5 8A 3E C5 2E 15 D9 9B F5 8E -- 090300
3E C5 2E 15 D9 9B F5 9A 3E C5 2E 05 DD 9B F5 9E -- 090310
2E 52 74 00 3D 83 F5 06 3E C5 2E 1D D9 9B F5 96 -- 090320
C4 83 00 34 EE 9B 9A F5 A2 36 FF 2E F5 A4 36 FF -- 090330
F5 8C 36 FF 2E F5 A2 36 FF 2E F5 A4 36 FF 2E 04 -- 090340
75 C0 0B 08 C4 83 00 4C 09 70 9A F5 8A 36 FF 2E -- 090350
11 74 00 04 3D 05 8B F5 6E 3E C5 2E 00 8A E9 03 -- 090360
54 EA 88 9A 05 75 00 03 3D 05 8B F5 0E 3E C5 2E -- 090370
46 8D 16 3B 75 00 04 3D 05 8B F5 6E 3E C5 2E 00 -- 090380
34 EF 50 9A F5 8A 36 FF 2E F5 8C 36 FF 2E 50 F6 -- 090390
1D D9 9B F5 8A 3E C5 2E F6 46 D9 9B 08 C4 83 00 -- 0903A0
0B 9A 32 6A 1D D9 9B F5 96 3E C5 2E FA 46 D9 9B -- 0903B0
```

EP 0 533 348 A2

```
05 D9 9B F5 96 3E C5 2E 2F EB 02 C4 83 00 54 F3 -- 0903C0
ED 99 9A 05 D9 9B F5 8A 3E C5 2E 00 5C ED 99 9A -- 0903D0
C5 2E 09 EB 12 C4 83 00 64 1F 4C 9A 07 6A 00 5C -- 0903E0
8B 55 57 56 CB 5E 5F C9 9B 00 00 05 C7 F5 86 3E -- 0903F0
E9 03 75 00 03 3D 05 8B F5 0E 3E C5 2E EC 01 FE -- 090400
2E 01 76 E9 03 74 00 3D 83 F5 12 3E C5 2E 01 83 -- 090410
05 8B F5 6E 3E C5 2E 3E 74 00 3D 83 F5 86 3E C5 -- 090420
EB 02 C4 83 00 54 F3 0B 9A 33 6A 0C 75 00 04 3D -- 090430
C5 2E 00 5C ED 99 9A 05 D9 9B F5 96 3E C5 2E 4B -- 090440
1F 4C 9A 08 6A 00 5C ED 99 9A 05 D9 9B F5 8A 3E -- 090450
00 01 05 C7 F5 86 3E C5 2E 25 EB 12 C4 83 00 64 -- 090460
2E F5 A4 36 FF 2E 12 74 00 3D 83 F5 06 3E C5 2E -- 090470
A8 36 FF 2E 04 C4 83 00 34 EE 9B 9A F5 A2 36 FF -- 090480
FF 2E 04 C4 83 00 5C E0 79 9A F5 A6 36 FF 2E F5 -- 090490
04 C4 83 00 5C 29 2E 9A F5 A6 36 FF 2E F5 A8 36 -- 0904A0
A6 3E C5 2E 62 75 00 04 3D 05 8B F5 6E 3E C5 2E -- 0904B0
AA 3E C5 2E 1D D9 9B F5 8A 3E C5 2E 05 DF 9B F5 -- 0904C0
06 3E C5 2E 1D D9 9B F5 96 3E C5 2E 05 DF 9B F5 -- 0904D0
F5 72 36 FF 2E F5 74 36 FF 2E 2C 74 00 3D 83 F5 -- 0904E0
83 00 4C 09 70 9A F5 8A 36 FF 2E F5 8C 36 FF 2E -- 0904F0
E9 00 00 05 C7 F5 86 3E C5 2E 0C 75 C0 0B 08 C4 -- 090500
C5 2E 6E EB 02 C4 83 00 54 F3 0B 9A 32 6A 00 83 -- 090510

C5 2E 1D D9 9B F5 8A 3E C5 2E 05 D9 9B F5 8E 3E -- 090520
C5 2E 1D D9 9B F5 96 3E C5 2E 05 D9 9B F5 9A 3E -- 090530
36 FF 2E F5 A4 36 FF 2E 20 74 00 3D 83 F5 06 3E -- 090540
4C 09 70 9A F5 8A 36 FF 2E F5 8C 36 FF 2E F5 A2 -- 090550
05 D9 9B F5 96 3E C5 2E 9E 74 C0 0B 08 C4 83 00 -- 090560
ED 99 9A 05 D9 9B F5 8A 3E C5 2E 00 5C ED 99 9A -- 090570
82 3E C5 2E 12 C4 83 00 64 1F 4C 9A 07 6A 00 5C -- 090580
2E EC 8B 55 57 56 CB 5E 5F C9 9B 00 01 05 C7 F5 -- 090590
05 8B F5 0E 3E C5 2E 31 75 00 3D 83 F5 12 3E C5 -- 0905A0
3E C5 2E 05 D9 9B F5 8E 3E C5 2E 20 75 00 02 3D -- 0905B0
3E C5 2E 05 D9 9B F5 9A 3E C5 2E 1D DD 9B F5 92 -- 0905C0
56 CB 5E 5F C9 9B 00 54 F1 06 9A 1D DD 9B F5 9E -- 0905D0
C5 2E 1A 75 00 3D 83 F5 12 3E C5 2E EC 8B 55 57 -- 0905E0
C7 F5 82 3E C5 2E 09 75 00 02 3D 05 8B F5 0E 3E -- 0905F0
57 56 CB 5E 5F C9 00 54 F1 06 9A 00 00 05 01 FE -- 090600
3D 83 F5 86 3E C5 2E 00 00 FE 46 C7 00 00 02 C8 -- 090610
8B F5 6E 3E C5 2E 00 00 05 C7 01 47 E9 03 75 00 -- 090620
02 C4 83 00 54 F3 0B 9A 33 6A 0C 75 00 04 3D 05 -- 090630
2E 00 5C ED 99 9A 05 D9 9B F5 96 3E C5 2E 24 EB -- 090640
4C 9A 08 6A 00 5C ED 99 9A 05 D9 9B F5 8A 3E C5 -- 090650
00 02 3D 05 8B F5 0E 3E C5 2E 12 C4 83 00 64 1F -- 090660
F5 B4 36 FF 2E 02 6A FF 6A 12 6A 00 E7 E9 03 74 -- 090670
9A F5 AE 36 FF 2E F5 B0 36 FF 2E F5 B2 36 FF 2E -- 090680
FF 2E F5 44 36 FF 2E 50 52 0C C4 83 00 5C 93 FD -- 090690
F5 4E 3E C5 2E 0A C4 83 00 5C ED 6E 9A F5 42 36 -- 0906A0
28 52 9A 35 FF 04 6A 00 6A 00 6A 10 74 00 3D 83 -- 0906B0
2E 02 55 8B 05 8B F5 42 3E C5 2E 08 C4 83 00 64 -- 0906C0
24 36 FF 2E 00 E6 68 02 55 89 05 89 F5 52 3E C5 -- 0906D0
F5 26 36 FF 2E F5 28 36 FF 2E F5 22 36 FF 2E F5 -- 0906E0
36 FF 2E 50 FE 46 8D 16 0A C4 83 00 5C ED 6E 9A -- 0906F0
FF 02 75 FF F5 52 3E C5 2E F5 22 36 FF 2E F5 24 -- 090700
6A 11 74 00 FE 7E 83 0C C4 83 00 54 F5 DA 9A 35 -- 090710
08 C4 83 00 64 28 52 9A FE 76 FF 04 6A 00 6A 00 -- 090720
83 00 5C 94 D5 9A F5 42 36 FF 2E F5 44 36 FF 2E -- 090730
6A 00 6A 00 6A 22 74 00 FE 7E 83 FE 46 89 04 C4 -- 090740
6E 3E C5 2E 11 EB 08 C4 83 00 64 28 52 9A 50 04 -- 090750
46 8D 16 00 54 EA E3 9A 05 74 00 04 3D 05 8B F5 -- 090760
```

636

```
F8 68 04 6A F5 2A 36 FF 2E F5 2C 36 FF 2E 50 FE -- 090770
6A 11 74 00 FE 7E 83 0C C4 83 00 64 40 D0 9A 01 -- 090780
08 C4 83 00 64 28 52 9A FE 76 FF 04 6A 00 6A 00 -- 090790
6A 50 0D FF 05 8B F5 6A 3E C5 2E 50 FE 46 8D 16 -- 0907A0
00 FE 7E 83 0A C4 83 00 64 40 D0 9A 01 F6 68 03 -- 0907B0
00 64 28 52 9A FE 76 FF 04 6A 00 6A 00 6A 11 74 -- 0907C0
2E 05 8B 1F 74 00 3D 83 F5 5E 3E C5 2E 08 C4 83 -- 0907D0
68 03 6A 35 FF 50 FE 46 8D 16 05 89 F5 62 3E C5 -- 0907E0
62 3E C5 2E 09 EB 0A C4 83 00 64 40 D0 9A 01 FA -- 0907F0
00 01 05 C7 F5 12 3E C5 2E 00 00 05 C7 F5 01 FE -- 090800
D9 9B EE D9 9B 00 00 06 C8 57 56 CB 5E 5F C9 9B -- 090810
33 05 C6 F5 66 3E C5 2E 40 75 33 0A 7E 83 FC 5E -- 090820
6A 05 6A 01 6A 57 F5 68 36 FF 2E 50 FA 46 8D 16 -- 090830
E9 03 75 00 FA 7E 83 0E C4 83 00 64 40 D0 9A 6E -- 090840
28 52 9A FA 76 FF 00 6A 00 6A 00 6A 00 6A 01 2F -- 090850
05 D9 9B F5 8A 3E C5 2E 01 19 E9 0A C4 83 00 64 -- 090860
C5 2E 1D D9 9B F5 B6 3E C5 2E F5 BA 26 DC 2E 9B -- 090870
C2 3E C5 2E F5 BA 26 DC 2E 9B 05 D9 9B F5 96 3E -- 090880
06 DC 2E 9B 05 D9 9B F5 8A 3E C5 2E 1D D9 9B F5 -- 090890
9B F5 96 3E C5 2E 1D D9 9B F5 C6 3E C5 2E F5 BA -- 0908A0
1D D9 9B F5 CA 3E C5 2E F5 BA 06 DC 2E 9B 05 D9 -- 0908B0

D8 26 9B 05 D9 9B F5 B6 3E C5 2E F5 72 36 C4 2E -- 0908C0
05 D9 9B F5 72 3E C5 2E 10 73 00 5C ED 94 9A 1C -- 0908D0
3E C5 2E F5 CE 36 C4 2E 1D D9 9B F5 B6 3E C5 2E -- 0908E0
10 73 00 5C ED 94 9A 1C D8 26 9B 05 D9 9B F5 C2 -- 0908F0
1D D9 9B F5 C2 3E C5 2E 05 D9 9B F5 CE 3E C5 2E -- 090900
D8 26 9B 05 D9 9B F5 C6 3E C5 2E F5 D2 36 C4 2E -- 090910
05 D9 9B F5 D2 3E C5 2E 10 76 00 5C ED 94 9A 1C -- 090920
3E C5 2E F5 D6 36 C4 2E 1D D9 9B F5 C6 3E C5 2E -- 090930
10 76 00 5C ED 94 9A 1C D8 26 9B 05 D9 9B F5 CA -- 090940
1D D9 9B F5 CA 3E C5 2E 05 D9 9B F5 D6 3E C5 2E -- 090950
36 FF 2E 50 FA 46 8D 16 32 05 C6 F5 66 3E C5 2E -- 090960
C4 83 00 64 40 D0 9A 6E 6A 05 6A 01 6A 57 F5 68 -- 090970
F5 78 36 FF 2E 50 FC 46 8D 16 50 FA 46 8D 16 0E -- 090980
2E F5 C2 36 FF 2E F5 C4 36 FF 2E F5 76 36 FF 2E -- 090990
00 CC 68 0B 6A 01 6A F5 B6 36 FF 2E F5 B8 36 FF -- 0909A0
00 6A 13 74 00 FA 7E 83 1A C4 83 00 64 40 D0 9A -- 0909B0
C4 83 00 64 28 52 9A FA 76 FF 00 6A 00 6A 00 6A -- 0909C0
FF 2E 50 FA 46 8D 16 16 05 C6 F5 66 3E C5 2E 0A -- 0909D0
83 00 64 40 D0 9A 6E 6A 05 6A 01 6A 57 F5 68 36 -- 0909E0
00 6A 00 6A 00 6A 00 6A 13 74 00 FA 7E 83 0E C4 -- 0909F0
5F C9 9B 0A C4 83 00 64 28 52 9A FA 76 FF 01 FE -- 090A00
FE 7E 00 3C FE 7C 00 3C 96 CA 00 3C AE 54 CB 5E -- 090A10
FE 94 00 3C FF F8 00 3C FF F7 00 3C FF F6 00 3C -- 090A20
FE 88 00 3C FE 8C 00 3C FE 84 00 3C 91 4C 00 3C -- 090A30
FF A6 00 3C 90 7E 00 3C FE 90 00 3C 90 7A 00 3C -- 090A40
FF 7A 00 3C FF B4 00 3C 95 62 00 3C 95 0E 00 3C -- 090A50
86 9E 00 3C FE 82 00 3C 92 CE 00 3C 92 CA 00 3C -- 090A60
FF C6 00 3C B3 24 00 3C 86 9C 00 3C 91 18 00 3C -- 090A70
FF 4C 00 3C FF C4 00 3C FF C3 00 3C FF C2 00 3C -- 090A80
FF 56 00 3C FF 8E 00 3C FF B8 00 3C FF C0 00 3C -- 090A90
FF D6 00 3C FF 4E 00 3C FF 92 00 3C FF BC 00 3C -- 090AA0
86 F6 00 3C 86 A2 00 3C FF 80 00 3C FF 7E 00 3C -- 090AB0
FF EE 40 08 00 00 00 00 00 00 00 3C FF E6 00 3C -- 090AC0
FF CA 00 3C FF CE 00 3C FF F2 00 3C FF EA 00 3C -- 090AD0
C7 12 7E C5 00 01 00 C8 57 56 00 3C FF D2 00 3C -- 090AE0
01 00 68 00 6A 50 FF 00 86 8D 16 57 56 00 00 05 -- 090AF0
FF 50 FF 0C 86 8D 16 57 56 5E 5F 00 8C 00 02 9A -- 090B00
57 56 5E 5F 00 5C FE EC 9A 30 6A 0E 76 FF 10 76 -- 090B10
```

```
50 00 30 05 0E 46 8B 10 76 FF 50 FF 46 86 8D 16  --  090B20
FF 62 86 8D 16 57 56 5E 5F 00 5C FE EC 9A 10 6A  --  090B30
FE EC 9A 52 6A 50 00 48 05 0E 46 8B 10 76 FF 50  --  090B40
46 8B 10 76 FF 50 B4 46 8D 16 57 56 5E 5F 00 5C  --  090B50
8D 16 5E 5F 00 5C FE EC 9A 30 6A 50 00 9A 05 0E  --  090B60
FF 14 76 FF 04 C4 83 00 54 F6 8E 9A 50 FF 00 86  --  090B70
8F 9A 0A 76 FF 0C 76 FF 50 FF 00 86 8D 16 12 76  --  090B80
C5 EC 8B 55 57 56 CB 5E 5F C9 0C C4 83 00 54 F7  --  090B90
45 C7 00 03 45 C6 01 02 45 C6 00 80 05 C7 0A 7E  --  090BA0
3E 45 C7 00 80 3C 45 C7 02 00 06 45 C7 00 02 04  --  090BB0
0C 44 45 C7 00 8C 42 45 C7 01 80 40 45 C7 01 00  --  090BC0
7E C5 08 EB 00 04 5E 45 C7 07 75 00 13 7D 80 02  --  090BD0
56 CB 5E 5F C9 00 00 60 45 C7 00 08 5E 45 C7 0A  --  090BE0
57 14 76 FF 00 00 05 C7 12 7E C5 00 01 00 C8 57  --  090BF0
DA 9A 0A 76 FF 0C 76 FF 50 FF 00 86 8D 16 01 FE  --  090C00
57 56 7B 75 00 3D 83 12 7E C5 0C C4 83 00 54 F7  --  090C10
00 8C 00 02 9A 00 E6 68 00 6A 0E 76 FF 10 76 FF  --  090C20
50 FF 0C 86 8D 16 0E 76 FF 10 76 FF 57 56 5E 5F  --  090C30
46 8B 10 76 FF 57 56 5E 5F 00 5C FE EC 9A 30 6A  --  090C40
FE EC 9A 10 6A 50 FF 46 86 8D 16 50 00 30 05 0E  --  090C50

50 00 48 05 0E 46 8B 10 76 FF 57 56 5E 5F 00 5C  --  090C60
56 5E 5F 00 5C FE EC 9A 52 6A 50 FF 62 86 8D 16  --  090C70
50 B4 46 8D 16 50 00 9A 05 0E 46 8B 10 76 FF 57  --  090C80
55 57 56 CB 5E 5F C9 5E 5F 00 5C FE EC 9A 30 6A  --  090C90
FF 00 6A 00 6A 00 6A 00 00 05 C7 12 7E C5 EC 8B  --  090CA0
12 7E C5 0A C4 83 00 64 35 C2 9A 0A 76 FF 0C 76  --  090CB0
6A 01 00 68 0A 76 FF 0C 76 FF 1E 75 C0 0B 05 89  --  090CC0
C5 0C C4 83 00 64 35 3F 9A 0E 76 FF 10 76 FF 01  --  090CD0
12 7E C5 EC 8B 55 57 56 CB 5E 5F C9 05 89 12 7E  --  090CE0
0A 76 FF 0C 76 FF 00 6A 00 6A 00 6A 00 00 05 C7  --  090CF0
75 C0 0B 05 89 12 7E C5 0A C4 83 00 64 35 C2 9A  --  090D00
FF 10 76 FF 01 6A 01 00 68 0A 76 FF 0C 76 FF 1E  --  090D10
C9 05 89 12 7E C5 0C C4 83 00 64 34 BC 9A 0E 76  --  090D20
00 00 05 C7 12 7E C5 00 01 04 C8 57 56 CB 5E 5F  --  090D30
00 02 9A 01 00 68 00 6A 50 FF 00 86 8D 16 57 56  --  090D40
FF 10 76 FF 50 FF 0C 86 8D 16 57 56 5E 5F 00 8C  --  090D50
F4 06 DD 2E 9B 5E 5F 00 5C FE EC 9A 20 6A 0E 76  --  090D60
34 9E DD 9B FF F4 06 DD 2E 9B FF 2C 9E DD 9B FF  --  090D70
96 89 FF 46 86 89 0A 55 8B 08 45 8B 0E 7E C5 FF  --  090D80
FF 4C 96 89 FF 4A 86 89 0E 55 8B 0C 45 8B FF 48  --  090D90
08 C4 83 00 5C EE 2F 9A 00 5C ED 99 9A EE D9 9B  --  090DA0
00 5C ED 99 9A EE D9 9B FF 50 96 89 FF 4E 86 89  --  090DB0
FF 54 96 89 FF 52 86 89 08 C4 83 00 5C EE 2F 9A  --  090DC0
BE 80 04 C4 83 00 54 F6 8E 9A 50 FF 00 86 8D 16  --  090DD0
00 FE FC 86 C7 00 10 FE FE 86 C7 0E 75 00 FF 13  --  090DE0
FF 10 00 FE FC 86 C7 00 03 FE FE 86 C7 0C EB 01  --  090DF0
02 0C 68 50 FF 00 86 8D 16 12 76 FF 14 76 01 FE  --  090E00
CD 9A 0A 76 FF 0C 76 FF FE FE B6 FF FE FC B6 FF  --  090E10
EC 8B 55 57 56 CB 5E 5F C9 9B 12 C4 83 00 54 F9  --  090E20
00 10 05 C7 0E 7E C5 10 75 00 13 7D 80 0A 7E C5  --  090E30
00 03 05 C7 0E 7E C5 0E EB 01 00 05 C7 12 7E C5  --  090E40
16 7E C5 44 45 8B 0A 7E C5 10 00 05 C7 12 7E C5  --  090E50
C7 0E 7E C5 00 01 06 C8 57 56 CB 5E 5F C9 05 89  --  090E60
0C 76 FF 50 FF 00 86 8D 16 57 10 76 FF 00 00 05  --  090E70
3D 83 0E 7E C5 0C C4 83 00 54 F7 DA 9A 0A 76 FF  --  090E80
16 50 FE FC 86 8D 16 50 FE FA 86 8D 16 46 75 00  --  090E90
00 54 F9 1B 9A 50 FF 00 86 8D 16 50 FE FE 86 8D  --  090EA0
FF 50 FF 00 86 8D 16 0E 76 FF 10 76 FF 10 C4 83  --  090EB0
76 FF 0C 76 FF FE FE B6 FF FE FC B6 FF FE FA B6  --  090EC0
```

638

```
C8 57 56 CB 5E 5F C9 12 C4 83 00 54 F9 CD 9A 0A -- 090ED0
89 F6 46 89 00 74 05 16 56 8B 14 46 8B 00 00 0A -- 090EE0
FA 46 6B 69 74 04 FA 7E 83 00 00 FA 46 C7 F8 56 -- 090EF0
FA 46 6B 00 00 05 C7 F8 5E 8E F6 7E 03 F8 8B 0E -- 090F00
8B 0E FA 46 6B 00 00 02 45 C7 F6 7E 03 F8 8B 0E -- 090F10
03 F8 8B 0E FA 46 6B 63 9C 04 45 C7 F6 7E 03 F8 -- 090F20
F6 7E 03 F8 8B 0E FA 46 6B 63 9C 06 45 C7 F6 7E -- 090F30
45 C7 F6 7E 03 F8 8B 0E FA 46 6B 13 88 08 45 C7 -- 090F40
4C 0C 45 C7 F6 7E 03 F8 8B 0E FA 46 6B 09 C4 0A -- 090F50
FF 16 76 FF 18 76 FF 1A 76 FF 91 EB FA 46 FF 1D -- 090F60
0C C4 83 00 54 F7 8F 9A 0A 76 FF 0C 76 FF 14 76 -- 090F70
E0 D1 10 46 8B 00 94 E9 03 74 00 3D 83 18 7E C5 -- 090F80
56 89 FC 46 89 04 C4 83 00 64 4E A1 9A 01 6A 50 -- 090F90
7E 8B 15 7D 10 46 3B FA 46 8B 00 00 FA 46 C7 FE -- 090FA0
46 FF 05 89 06 E0 C1 FE 5E 8E FC 7E 03 E7 D1 FA -- 090FB0
D2 D1 E0 D1 00 01 B9 99 12 46 8B 00 6A E3 EB FA -- 090FC0
83 00 64 35 C2 9A 0A 76 FF 0C 76 FF 50 52 FA E2 -- 090FD0
00 00 FA 46 C7 34 75 C0 0B 05 89 18 7E C5 0A C4 -- 090FE0
76 FF 0A 76 FF 0C 76 FF 27 7D 0E 46 3B FA 46 8B -- 090FF0

00 64 35 3F 9A FC 76 FF FE 76 FF 02 6A 10 01 FE -- 091000
EB FA 46 FF 05 75 C0 0B 05 89 18 7E C5 0C C4 83 -- 091010
05 C7 12 7E C5 00 01 08 C8 57 56 CB 5E 5F C9 D1 -- 091020
FF 0C 76 FF 50 FF 00 86 8D 16 57 14 76 FF 00 00 -- 091030
00 3D 83 12 7E C5 0C C4 83 00 54 F7 DA 9A 0A 76 -- 091040
8D 16 50 FE FC 86 8D 16 50 FE FA 86 8D 16 74 75 -- 091050
83 00 54 F9 1B 9A 50 FF 00 86 8D 16 50 FE FE 86 -- 091060
00 6A FE F8 86 89 FE FE AE F7 FE FC 86 8B 10 C4 -- 091070
50 52 FA E2 D2 D1 E0 D1 00 01 B9 99 FE FA 86 8B -- 091080
7E C5 0A C4 83 00 64 35 C2 9A 0A 76 FF 0C 76 FF -- 091090
F8 B6 FF 0A 76 FF 0C 76 FF 1F 75 C0 0B 05 89 12 -- 0910A0
C4 83 00 64 35 3F 9A 0E 76 FF 10 76 FF 02 6A FE -- 0910B0
00 01 08 C8 57 56 CB 5E 5F C9 05 89 12 7E C5 0C -- 0910C0
FF 00 86 8D 16 57 14 76 FF 00 00 05 C7 12 7E C5 -- 0910D0
C5 0C C4 83 00 54 F7 DA 9A 0A 76 FF 0C 76 FF 50 -- 0910E0
86 8D 16 50 FE FA 86 8D 16 74 75 00 3D 83 12 7E -- 0910F0
9A 50 FF 00 86 8D 16 50 FE FE 86 8D 16 50 FE FC -- 091100
89 FE FE AE F7 FE FC 86 8B 10 C4 83 00 54 F9 1B -- 091110
D1 E0 D1 00 01 B9 99 FE FA 86 8B 00 6A FE F8 86 -- 091120
00 64 35 C2 9A 0A 76 FF 0C 76 FF 50 52 FA E2 D2 -- 091130
FF 0C 76 FF 1F 75 C0 0B 05 89 12 7E C5 0A C4 83 -- 091140
BC 9A 0E 76 FF 10 76 FF 02 6A FE F8 B6 FF 0A 76 -- 091150
56 CB 5E 5F C9 05 89 12 7E C5 0C C4 83 00 64 34 -- 091160
0E 7E 83 0F 75 00 13 7D 80 0A 7E C5 EC 8B 55 57 -- 091170
02 0E 7E 83 0D EB 10 01 05 C7 10 7E C5 16 7E 0F -- 091180
C8 57 56 CB 5E 5F C9 10 02 05 C7 10 7E C5 07 7E -- 091190
8D 16 57 16 76 FF 00 00 05 C7 14 7E C5 00 01 0A -- 0911A0
83 00 54 F7 DA 9A 0A 76 FF 0C 76 FF 50 FF 00 86 -- 0911B0
16 76 FF 00 91 E9 03 74 00 3D 83 14 7E C5 0C C4 -- 0911C0
83 00 54 FC 5D 9A 50 FF 00 86 8D 16 0E 76 FF 57 -- 0911D0
50 FE FA 86 8D 16 74 75 00 3D 83 14 7E C5 0A C4 -- 0911E0
00 86 8D 16 50 FE FE 86 8D 16 50 FE FC 86 8D 16 -- 0911F0
FE FC 86 8B 10 C4 83 00 54 F9 1B 9A 50 FF 01 FE -- 091200
86 89 99 C7 8B E7 D1 FE FA BE 03 F8 8B 0E 6E F7 -- 091210
0A 76 FF 0C 76 FF 50 52 00 6A FE F8 96 89 FE F6 -- 091220
75 C0 0B 05 89 14 7E C5 0A C4 83 00 64 35 C2 9A -- 091230
12 76 FF 02 6A FE FC B6 FF 0A 76 FF 0C 76 FF 1F -- 091240
05 89 14 7E C5 0C C4 83 00 64 34 BC 9A 10 76 FF -- 091250
00 05 C7 14 7E C5 00 01 0A C8 57 56 CB 5E 5F C9 -- 091260
76 FF 0C 76 FF 50 FF 00 86 8D 16 57 16 76 FF 00 -- 091270
```

639

```
74 00 3D 83 14 7E C5 0C C4 83 00 54 F7 DA 9A 0A -- 091280
FF 00 86 8D 16 0E 76 FF 57 16 76 FF 00 91 E9 03 -- 091290
75 00 3D 83 14 7E C5 0A C4 83 00 54 FC 5D 9A 50 -- 0912A0
86 8D 16 50 FE FC 86 8D 16 50 FE FA 86 8D 16 74 -- 0912B0
C4 83 00 54 F9 1B 9A 50 FF 00 86 8D 16 50 FE FE -- 0912C0
E7 D1 FE FA BE 03 F8 8B 0E 6E F7 FE FC 86 8B 10 -- 0912D0
FF 50 52 00 6A FE F8 96 89 FE F6 86 89 99 C7 8B -- 0912E0
14 7E C5 0A C4 83 00 64 35 C2 9A 0A 76 FF 0C 76 -- 0912F0
FE FC B6 FF 0A 76 FF 0C 76 FF 1F 75 C0 0B 05 89 -- 091300
0C C4 83 00 64 35 3F 9A 10 76 FF 12 76 FF 02 6A -- 091310
C5 00 00 08 C8 57 56 CB 5E 5F C9 05 89 14 7E C5 -- 091320
14 76 FF 16 76 FF 57 1A 76 FF 00 00 05 C7 18 7E -- 091330
C4 83 00 54 FE 87 9A 0E 76 FF 10 76 FF 12 76 FF -- 091340
16 38 75 00 3D 83 18 7E C5 FE 56 89 FC 46 89 0E -- 091350
08 C4 83 00 5C EE E8 9A FC 76 FF 52 50 0A 46 8D -- 091360
01 FF E3 81 FA 4E 8B F8 5E 8B FA 56 89 F8 46 89 -- 091370
56 11 F8 46 01 D1 1B C3 2B D2 2B 02 00 B8 C9 2B -- 091380
00 08 C8 57 56 CB 5E 5F C9 FA 56 8B F8 46 8B FA -- 091390

7E 83 2C 75 00 12 7E 83 00 00 05 C7 14 7E C5 00 -- 0913A0
9A 50 52 99 0E 46 8B 50 0A 46 8D 16 63 75 08 10 -- 0913B0
00 01 25 FE 56 89 FC 46 89 08 C4 83 00 5C EE E2 -- 0913C0
37 75 08 10 7E 83 3D EB FE 56 11 FC 46 01 D2 2B -- 0913D0
83 00 5C EE D0 9A 0A 76 FF 0C 76 FF 02 6A 00 6A -- 0913E0
8D 16 FA 56 89 F8 46 89 0C 56 13 0A 46 03 08 C4 -- 0913F0
00 5C EE E8 9A 50 52 99 0E 46 8B 50 F8 46 01 FE -- 091400
C9 FE 56 8B FC 46 8B FE 56 89 FC 46 89 08 C4 83 -- 091410
7E 81 00 00 FE 46 C7 00 00 02 C8 57 56 CB 5E 5F -- 091420
0C 5E 8E 0A 7E 03 E7 D1 FE 7E 8B 1E 74 01 00 FE -- 091430
46 FF 08 EB C0 2B 04 74 FE 46 3B 06 E8 C1 05 8B -- 091440
00 00 04 C8 57 56 CB 5E 5F C9 00 01 B8 DB EB FE -- 091450
00 FE 46 C7 01 00 FC 46 C7 00 00 05 C7 12 7E C5 -- 091460
9A 0A 76 FF 0C 76 FF FC 76 FF FE 76 FF 00 6A 00 -- 091470
1E 75 C0 0B 05 89 12 7E C5 0A C4 83 00 64 35 C2 -- 091480
76 FF 10 76 FF 01 6A 01 00 68 0A 76 FF 0C 76 FF -- 091490
5F C9 05 89 12 7E C5 0C C4 83 00 64 34 BC 9A 0E -- 0914A0
C7 00 00 05 C7 12 7E C5 00 00 04 C8 57 56 CB 5E -- 0914B0
76 FF FE 76 FF 00 6A 00 00 FE 46 C7 01 00 FC 46 -- 0914C0
C5 0A C4 83 00 64 35 C2 9A 0A 76 FF 0C 76 FF FC -- 0914D0
00 68 0A 76 FF 0C 76 FF 1E 75 C0 0B 05 89 12 7E -- 0914E0
C4 83 00 64 35 3F 9A 0E 76 FF 10 76 FF 01 6A 01 -- 0914F0
00 00 00 00 00 00 CB 5E 5F C9 05 89 12 7E C5 0C -- 091500
E4 3E C5 2E 00 00 10 C8 57 56 00 00 00 00 3F F0 -- 091510
C6 00 F5 46 C6 00 54 C8 1C 9A 05 75 00 3D 83 0A -- 091520
C6 A0 F2 46 C6 A0 F1 46 C6 00 F0 46 C6 00 F4 46 -- 091530
F4 46 8A 50 F0 46 8D 16 50 FE 46 8D 16 A0 F3 46 -- 091540
D0 9A 01 32 68 06 6A 50 E4 2A F5 46 8A 50 E4 2A -- 091550
9A FE 76 FF 0B 74 00 FE 7E 83 10 C4 83 00 64 40 -- 091560
03 6A 16 6A 50 FE 46 8D 16 02 C4 83 00 64 59 DC -- 091570
0B 74 00 FE 7E 83 0A C4 83 00 64 40 D0 9A 6F 6A -- 091580
E8 06 DD 2E 9B 02 C4 83 00 64 59 DC 9A FE 76 FF -- 091590
16 FA 5E D9 9B 0A F0 06 DD 2E 9B F6 5E D9 9B 0A -- 0915A0
01 50 68 05 6A 02 6A 50 F6 46 8D 16 50 FE 46 8D -- 0915B0
76 FF 0B 74 00 FE 7E 83 0E C4 83 00 64 40 D0 9A -- 0915C0
05 C7 0A F8 3E C5 2E 02 C4 83 00 64 59 DC 9A FE -- 0915D0
50 FE 46 8D 16 00 00 05 C7 0A FC 3E C5 2E 00 00 -- 0915E0
9A 00 44 57 40 9A 06 C4 83 00 2C 2D 13 9A 00 6A -- 0915F0
2E 00 01 05 C7 0B 00 3E C5 2E 00 4C 02 61 01 FE -- 091600
25 EB 00 44 57 C9 9A 07 74 00 3D 83 0A E4 3E C5 -- 091610
EB 00 44 5F EB 9A 07 74 00 3D 83 0B 04 3E C5 2E -- 091620
```

```
40 D0 9A 01 F7 68 03 6A 01 6A 50 FE 46 8D 16 14 -- 091630
00 00 04 C8 57 56 CB 5E 5F C9 9B 0A C4 83 00 64 -- 091640
2E 50 FE 46 8D 16 1C 74 00 3D 83 0B 08 3E C5 2E -- 091650
D0 9A 01 F8 68 04 6A 0B 0C 36 FF 2E 0B 0E 36 FF -- 091660
46 8B 01 05 C6 0B 10 3E C5 2E 0C C4 83 00 64 40 -- 091670
C6 05 88 0B 18 3E C5 2E 05 88 0B 14 3E C5 2E 0A -- 091680
6A 01 6A 50 FC 46 8D 16 50 FE 46 8D 16 17 FC 46 -- 091690
74 00 FE 7E 83 0E C4 83 00 64 40 D0 9A 6E 6A 05 -- 0916A0
FE 46 8D 16 02 C4 83 00 64 59 DC 9A FE 76 FF 0B -- 0916B0
0B 12 36 FF 2E 0B 24 36 FF 2E 0B 26 36 FF 2E 50 -- 0916C0
2E 0B 20 36 FF 2E 0B 22 36 FF 2E 0B 10 36 FF 2E -- 0916D0
00 CC 68 0B 6A 01 6A 0B 1C 36 FF 2E 0B 1E 36 FF -- 0916E0
76 FF 0B 74 00 FE 7E 83 1A C4 83 00 64 40 D0 9A -- 0916F0
46 8D 16 16 FC 46 C6 02 C4 83 00 64 59 DC 9A FE -- 091700
40 D0 9A 6E 6A 05 6A 01 6A 50 FC 46 8D 16 50 FE -- 091710
DC 9A FE 76 FF 0B 74 00 FE 7E 83 0E C4 83 00 64 -- 091720
14 74 00 3D 83 0B 08 3E C5 2E 02 C4 83 00 64 59 -- 091730

64 40 D0 9A 01 FA 68 03 6A 35 FF 50 FE 46 8D 16 -- 091740
86 C6 00 01 42 C8 57 56 CB 5E 5F C9 0A C4 83 00 -- 091750
DB 86 C6 02 FE DA 86 C6 01 FE D9 86 C6 00 FE D8 -- 091760
FE DE 86 C6 05 FE DD 86 C6 04 FE DC 86 C6 03 FE -- 091770
09 FE E1 86 C6 08 FE E0 86 C6 07 FE DF 86 C6 06 -- 091780
C6 0C FE E4 86 C6 0B FE E3 86 C6 0A FE E2 86 C6 -- 091790
C5 2E 0F FE E7 86 C6 0E FE E6 86 C6 0D FE E5 86 -- 0917A0
00 00 05 C7 0A FC 3E C5 2E 00 01 05 C7 0A F8 3E -- 0917B0
C6 A0 FE BE 86 C6 00 FE C2 86 C6 00 FE C3 86 C6 -- 0917C0
8D 16 A0 FE C1 86 C6 A0 FE C0 86 C6 A0 FE BF 86 -- 0917D0
50 E4 2A FE C2 86 8A 50 FE BE 86 8D 16 50 FE 46 -- 0917E0
64 40 D0 9A 01 32 68 06 6A 50 E4 2A FE C3 86 8A -- 0917F0
9A FE 76 FF 0B 74 00 FE 7E 83 10 C4 83 00 01 FE -- 091800
FE 46 8D 16 A0 FE F0 86 C6 02 C4 83 00 64 59 DC -- 091810
6A 10 6A 50 FE F0 86 8D 16 50 FE D8 86 8D 16 50 -- 091820
83 00 64 40 D0 9A 01 43 68 0A 6A 00 6A 00 6A 01 -- 091830
00 64 59 DC 9A FE 76 FF 0B 74 00 FE 7E 83 18 C4 -- 091840
8D 16 02 C4 83 00 5C 01 32 9A 00 A0 68 02 C4 83 -- 091850
50 F2 46 89 C0 2B 50 F0 46 89 00 01 B8 50 FE 46 -- 091860
C0 2B 50 F6 46 89 00 FF B8 50 F4 46 89 00 01 B8 -- 091870
FC 46 89 C0 2B 50 FA 46 89 00 04 B8 50 F8 46 89 -- 091880
2E 9B 16 C4 83 00 64 40 D0 9A 01 4F 68 09 6A 50 -- 091890
9B 0A F0 06 DD 2E 9B FE E8 9E D9 9B 0B 28 06 DD -- 0918A0
6A 50 FE E8 86 8D 16 50 FE 46 8D 16 FE EC 9E D9 -- 0918B0
C5 2E 0E C4 83 00 64 40 D0 9A 01 50 68 05 6A 02 -- 0918C0
9B 0B 34 3E C5 2E EE D9 9B 00 01 05 C7 0B 30 3E -- 0918D0
DD 2E 9B 1D D9 9B 0B 38 3E C5 2E EE D9 9B 1D D9 -- 0918E0
40 06 DD 2E 9B 1D D9 9B 0B 3C 3E C5 2E 0B 40 06 -- 0918F0
05 C7 0B 4C 3E C5 2E 1D D9 9B 0B 48 3E C5 2E 0B -- 091900
28 06 DD 2E 9B 00 00 05 C7 0B 50 3E C5 2E 00 00 -- 091910
FF 2E 50 FE 46 8D 16 1D D9 9B 0B 54 3E C5 2E 0B -- 091920
36 FF 2E 0B 4E 36 FF 2E 0B 34 36 FF 2E 0B 36 36 -- 091930
FF 0B 58 3E C5 2E 02 6A 57 0B 56 36 FF 2E 0B 4C -- 091940
86 C7 18 C4 83 00 64 3D BA 9A 01 93 68 08 6A 35 -- 091950
1F 16 FD 8B 16 7D 00 FF FE C4 BE 81 00 00 FE C4 -- 091960
FE C4 86 FF FE F0 85 88 FE C4 86 8B FE C4 BE 03 -- 091970
86 8D 16 50 FE D8 86 8D 16 50 FE 46 8D 16 E2 EB -- 091980
43 68 0A 6A 00 6A 00 6A 00 FF 68 10 6A 50 FE F0 -- 091990
FF 0B 74 00 FE 7E 83 18 C4 83 00 64 40 D0 9A 01 -- 0919A0
C6 0B 5C 3E C5 2E 02 C4 83 00 64 59 DC 9A FE 76 -- 0919B0
0B 62 36 FF 2E 00 01 05 C7 0B 00 3E C5 2E 01 05 -- 0919C0
3E C5 2E 04 C4 83 00 44 5A 4B 9A 0B 60 36 FF 2E -- 0919D0
```

```
00 00 02 C8 57 56 CB 5E 5F C9 9B 00 05 C6 0B 5C -- 0919E0
2C 2D 13 9A 35 FF 0B 30 3E C5 2E 50 FE 46 8D 16 -- 0919F0
00 00 14 C8 57 56 CB 5E 5F C9 06 C4 83 00 01 FE -- 091A00
5C 01 32 9A 00 A0 68 00 01 05 C7 0A FC 3E C5 2E -- 091A10
9B 1D D9 9B 0B 34 3E C5 2E EE D9 9B 02 C4 83 00 -- 091A20
0B 40 06 DD 2E 9B 1D D9 9B 0B 38 3E C5 2E EE D9 -- 091A30
C5 2E 0B 40 06 DD 2E 9B 1D D9 9B 0B 3C 3E C5 2E -- 091A40
03 3D 48 05 8B 0B 30 3E C5 2E 1D D9 9B 0B 48 3E -- 091A50
05 6C 05 58 05 50 A7 FF 2E D8 8B E0 D1 4D 77 00 -- 091A60
3E C5 2E 00 00 05 C7 0B 4C 3E C5 2E 05 82 05 77 -- 091A70
00 05 C7 0B 4C 3E C5 2E 28 EB 00 00 05 C7 0B 50 -- 091A80
C5 2E 09 EB 00 00 05 C7 0B 4C 3E C5 2E EA EB 02 -- 091A90
02 00 05 C7 0B 50 3E C5 2E 02 00 05 C7 0B 4C 3E -- 091AA0
8D 16 1D D9 9B 0B 54 3E C5 2E 0B 28 06 DD 2E 9B -- 091AB0
36 FF 2E 0B 34 36 FF 2E 0B 36 36 FF 2E 50 FE 46 -- 091AC0
2E 02 6A 57 0B 56 36 FF 2E 0B 4C 36 FF 2E 0B 4E -- 091AD0

00 64 3D BA 9A 01 93 68 08 6A 35 FF 0B 58 3E C5 -- 091AE0
0B 00 3E C5 2E 01 05 C6 0B 5C 3E C5 2E 18 C4 83 -- 091AF0
04 C4 83 00 44 5A 4B 9A 04 D0 68 0E 00 01 05 C7 -- 091B00
C8 57 56 CB 5E 5F C9 9B 00 05 C6 0B 5C 3E C5 2E -- 091B10
4C 3E C5 2E 00 01 05 C7 0B 30 3E C5 2E 00 00 02 -- 091B20
8D 16 00 00 05 C7 0B 50 3E C5 2E 00 00 05 C7 0B -- 091B30
6A 02 6A 0B 4C 36 FF 2E 0B 4E 36 FF 2E 50 FE 46 -- 091B40
64 3E C5 2E 0E C4 83 00 64 40 D0 9A 01 51 68 05 -- 091B50
0B 30 3E C5 2E 50 FE 46 8D 16 14 75 00 3D 83 0B -- 091B60
57 56 CB 5E 5F C9 06 C4 83 00 2C 2D 13 9A 35 FF -- 091B70
3E C5 2E 00 02 05 C7 0B 30 3E C5 2E 00 00 02 C8 -- 091B80
16 00 00 05 C7 0B 50 3E C5 2E 02 00 05 C7 0B 4C -- 091B90
02 6A 0B 4C 36 FF 2E 0B 4E 36 FF 2E 50 FE 46 8D -- 091BA0
3E C5 2E 0E C4 83 00 64 40 D0 9A 01 51 68 05 6A -- 091BB0
30 3E C5 2E 50 FE 46 8D 16 14 75 00 3D 83 0B 64 -- 091BC0
56 CB 5E 5F C9 06 C4 83 00 2C 2D 13 9A 35 FF 0B -- 091BD0
C5 2E 00 03 05 C7 0B 30 3E C5 2E 00 00 02 C8 57 -- 091BE0
02 00 05 C7 0B 50 3E C5 2E 00 00 05 C7 0B 4C 3E -- 091BF0
4C 36 FF 2E 0B 4E 36 FF 2E 50 FE 46 8D 16 01 FE -- 091C00
0E C4 83 00 64 40 D0 9A 01 51 68 05 6A 02 6A 0B -- 091C10
2E 50 FE 46 8D 16 14 75 00 3D 83 0B 64 3E C5 2E -- 091C20
5F C9 06 C4 83 00 2C 2D 13 9A 35 FF 0B 30 3E C5 -- 091C30
04 05 C7 0B 30 3E C5 2E 00 00 02 C8 57 56 CB 5E -- 091C40
C7 0B 50 3E C5 2E 02 00 05 C7 0B 4C 3E C5 2E 00 -- 091C50
36 FF 2E 0B 4E 36 FF 2E 50 FE 46 8D 16 02 00 05 -- 091C60
C4 83 00 64 40 D0 9A 01 51 68 05 6A 02 6A 0B 4C -- 091C70
50 FE 46 8D 16 14 75 00 3D 83 0B 64 3E C5 2E 0E -- 091C80
C9 06 C4 83 00 2C 2D 13 9A 35 FF 0B 30 3E C5 2E -- 091C90
2E 00 01 05 C7 0A 7E C5 EC 8B 55 57 56 CB 5E 5F -- 091CA0
3D 83 0B 6C 3E C5 2E 38 74 00 3D 83 0B 68 3E C5 -- 091CB0
83 00 64 28 52 9A 12 84 68 01 6A 00 6A 2E 75 00 -- 091CC0
02 B8 0A 75 00 02 3D 05 89 0B 70 3E C5 2E 06 C4 -- 091CD0
01 05 C7 0B 6C 3E C5 2E 1F EB 05 89 0A 7E C5 00 -- 091CE0
3A E8 9A 05 75 00 05 3D 05 8B 0B 74 3E C5 2E 00 -- 091CF0
EC 8B 55 57 56 CB 5E 5F C9 00 5C 07 ED 9A 00 14 -- 091D00
05 C6 0B 7C 3E C5 2E 00 01 05 C7 0B 78 3E C5 2E -- 091D10
3D 83 0B 80 3E C5 2E 03 05 C6 0B 5C 3E C5 2E 05 -- 091D20
01 05 C7 0B 00 3E C5 2E 00 54 C8 1C 9A 05 74 00 -- 091D30
5E 5F C9 04 C4 83 00 44 5A 4B 9A 00 6A 00 6A 00 -- 091D40
3E C5 2E 00 01 05 C7 0A 7E C5 EC 8B 55 57 56 CB -- 091D50
75 00 3D 83 0B 6C 3E C5 2E 38 74 00 3D 83 0B 68 -- 091D60
06 C4 83 00 64 28 52 9A 12 84 68 01 6A 00 6A 2E -- 091D70
C5 00 02 B8 0A 75 00 02 3D 05 89 0B 70 3E C5 2E -- 091D80
```

```
2E 00 01 05 C7 0B 6C 3E C5 2E 1F EB 05 89 0A 7E -- 091D90
00 14 3A E8 9A 05 75 00 05 3D 05 8B 0B 74 3E C5 -- 091DA0
C5 2E EC 8B 55 57 56 CB 5E 5F C9 00 5C 08 9B 9A -- 091DB0
2E 06 05 C6 0B 7C 3E C5 2E 00 02 05 C7 0B 78 3E -- 091DC0
74 00 3D 83 0B 80 3E C5 2E 03 05 C6 0B 5C 3E C5 -- 091DD0
6A 00 01 05 C7 0B 00 3E C5 2E 00 54 C8 1C 9A 05 -- 091DE0
56 CB 5E 5F C9 04 C4 83 00 44 5A 4B 9A 00 6A 00 -- 091DF0
3E C5 2E 00 01 05 C7 0A 7E C5 EC 8B 55 57 01 FE -- 091E00
75 00 3D 83 0B 6C 3E C5 2E 38 74 00 3D 83 0B 68 -- 091E10
06 C4 83 00 64 28 52 9A 12 84 68 01 6A 00 6A 2E -- 091E20
C5 00 02 B8 0A 75 00 02 3D 05 89 0B 70 3E C5 2E -- 091E30
2E 00 01 05 C7 0B 6C 3E C5 2E 1F EB 05 89 0A 7E -- 091E40
00 14 3A E8 9A 05 75 00 05 3D 05 8B 0B 74 3E C5 -- 091E50
C5 2E EC 8B 55 57 56 CB 5E 5F C9 00 5C 09 49 9A -- 091E60
2E 07 05 C6 0B 7C 3E C5 2E 00 04 05 C7 0B 78 3E -- 091E70

74 00 3D 83 0B 80 3E C5 2E 03 05 C6 0B 5C 3E C5 -- 091E80
6A 00 01 05 C7 0B 00 3E C5 2E 00 54 C8 1C 9A 05 -- 091E90
56 CB 5E 5F C9 04 C4 83 00 44 5A 4B 9A 00 6A 00 -- 091EA0
0B 68 3E C5 2E 00 01 05 C7 0A 7E C5 EC 8B 55 57 -- 091EB0
6A 2E 75 00 3D 83 0B 6C 3E C5 2E 38 74 00 3D 83 -- 091EC0
C5 2E 06 C4 83 00 64 28 52 9A 12 84 68 01 6A 00 -- 091ED0
0A 7E C5 00 02 B8 0A 75 00 02 3D 05 89 0B 70 3E -- 091EE0
3E C5 2E 00 01 05 C7 0B 6C 3E C5 2E 1F EB 05 89 -- 091EF0
F7 9A 00 14 3A E8 9A 05 75 00 05 3D 05 8B 0B 74 -- 091F00
78 3E C5 2E EC 8B 55 57 56 CB 5E 5F C9 00 5C 09 -- 091F10
3E C5 2E 08 05 C6 0B 7C 3E C5 2E 00 08 05 C7 0B -- 091F20
9A 05 74 00 3D 83 0B 80 3E C5 2E 03 05 C6 0B 5C -- 091F30
6A 00 6A 00 01 05 C7 0B 00 3E C5 2E 00 54 C8 1C -- 091F40
55 57 56 CB 5E 5F C9 04 C4 83 00 44 5A 4B 9A 00 -- 091F50
3D 83 0B 68 3E C5 2E 00 01 05 C7 0A 7E C5 EC 8B -- 091F60
6A 00 6A 2E 75 00 3D 83 0B 6C 3E C5 2E 38 74 00 -- 091F70
70 3E C5 2E 06 C4 83 00 64 28 52 9A 12 84 68 01 -- 091F80
05 89 0A 7E C5 00 02 B8 0A 75 00 02 3D 05 89 0B -- 091F90
0B 74 3E C5 2E 00 01 05 C7 0B 6C 3E C5 2E 1F EB -- 091FA0
5C 0A A5 9A 00 14 3A E8 9A 05 75 00 05 3D 05 8B -- 091FB0
C7 0B 78 3E C5 2E EC 8B 55 57 56 CB 5E 5F C9 00 -- 091FC0
0B 80 3E C5 2E 00 05 C6 0B 5C 3E C5 2E 00 00 05 -- 091FD0
C7 0B 00 3E C5 2E 00 54 C8 1C 9A 05 74 00 3D 83 -- 091FE0
C9 04 C4 83 00 44 5A 4B 9A 00 6A 00 6A 00 01 05 -- 091FF0
00 00 00 00 00 00 00 3C 92 50 00 CB 5E 5F 01 FE -- 092000
31 82 00 3C B3 1A BF F0 00 00 00 00 00 00 3F F0 -- 092010
91 32 00 3C 86 9E 00 3C 90 C2 00 6C 27 C4 00 6C -- 092020
31 54 00 6C 31 88 00 6C 31 87 00 6C 31 86 00 3C -- 092030
00 00 00 00 00 00 00 6C 31 64 00 6C 31 5C 00 6C -- 092040
31 74 00 6C 31 70 00 6C 31 6C 00 6C 31 80 40 00 -- 092050
31 7C 00 6C 31 78 40 8F F8 00 00 00 00 00 6C -- 092060
90 71 00 3C F5 A4 00 6C 31 68 00 6C 31 7E 00 6C -- 092070
86 82 00 3C 86 7C 00 6C 27 B8 00 5C 04 D0 00 3C -- 092080
90 70 00 6C 31 52 00 3C 86 9A 00 6C 31 84 00 3C -- 092090
F2 46 8D 16 00 00 0E C8 57 56 00 3C B3 18 00 3C -- 0920A0
0F 75 FF FF 3D 06 C4 83 00 5C D0 03 9A 0E 6A 50 -- 0920B0
16 17 EB 04 C4 83 00 2C D0 F8 9A 12 60 68 01 6A -- 0920C0
B4 9A 16 5C 36 FF 2E 16 5E 36 FF 2E 50 F2 46 8D -- 0920D0
00 00 0C C8 57 56 CB 5E 5F C9 08 C4 83 00 64 5B -- 0920E0
C7 00 01 F4 46 C7 00 00 FC 46 C7 00 01 FE 46 C7 -- 0920F0
C5 2E 00 00 FA 46 C7 00 00 F8 46 C7 00 00 F6 46 -- 092100
36 FF 2E 00 AA E9 03 75 05 23 FE 46 8B 16 60 3E -- 092110
5C 36 FF 2E 16 5E 36 FF 2E 16 64 36 FF 2E 16 66 -- 092120
10 5F 9A 08 75 C0 0B 08 C4 83 00 64 5A 20 9A 16 -- 092130
```

643

```
FF  16  68  36  FF  2E  16  6A  36  FF  2E  00  82  E9  00  5C  --  092140
C7  16  6C  3E  C5  2E  06  C4  83  00  34  21  48  9A  FE  76  --  092150
C1  1C  7F  00  FF  3D  05  8B  16  6C  3E  C5  2E  00  00  05  --  092160
16  72  1E  8E  2E  16  70  3E  03  2E  E7  D1  3D  8B  06  E0  --  092170
50  F4  46  8D  16  D8  EB  05  FF  16  6C  3E  C5  2E  05  89  --  092180
74  C0  0B  08  C4  83  00  2C  B6  2C  9A  50  FC  46  8D  16  --  092190
0B  74  00  3D  83  16  74  3E  C5  2E  21  EB  00  01  B8  05  --  0921A0
00  2C  CC  CD  9A  00  54  99  B2  9A  05  74  00  FC  7E  83  --  0921B0
00  0C  C8  57  56  CB  5E  5F  C9  C0  2B  00  54  12  29  9A  --  0921C0
00  00  F4  46  C7  00  00  FC  46  C7  00  02  FE  46  C7  00  --  0921D0
2E  00  00  FA  46  C7  00  00  F8  46  C7  00  01  F6  46  C7  --  0921E0
FF  2E  00  AC  E9  03  75  05  23  FE  46  8B  16  60  3E  C5  --  0921F0
2E  16  5E  36  FF  2E  16  78  36  FF  2E  16  7A  36  01  FE  --  092200
08  75  C0  0B  08  C4  83  00  64  5A  20  9A  16  5C  36  FF  --  092210

36  FF  2E  16  6A  36  FF  2E  00  84  E9  00  5C  11  08  9A  --  092220
3E  C5  2E  06  C4  83  00  34  21  48  9A  FE  76  FF  16  68  --  092230
00  FF  3D  05  8B  16  6C  3E  C5  2E  00  00  05  C7  16  6C  --  092240
8E  2E  16  70  3E  03  2E  E7  D1  3D  8B  06  E0  C1  1E  7F  --  092250
D6  EB  05  FF  16  6C  3E  C5  2E  02  00  85  89  16  72  1E  --  092260
83  00  2C  B6  2C  9A  50  FC  46  8D  16  50  F4  46  8D  16  --  092270
16  74  3E  C5  2E  21  EB  00  01  B8  05  74  C0  0B  08  C4  --  092280
00  54  99  B2  9A  05  74  00  FC  7E  83  0B  74  00  3D  83  --  092290
CB  5E  5F  C9  C0  2B  00  54  12  29  9A  00  2C  CC  CD  9A  --  0922A0
00  00  FC  46  C7  00  04  FE  46  C7  00  00  0C  C8  57  56  --  0922B0
C7  00  01  F8  46  C7  00  00  F6  46  C7  00  00  F4  46  C7  --  0922C0
03  75  05  23  FE  46  8B  16  60  3E  C5  2E  00  00  FA  46  --  0922D0
36  FF  2E  16  7C  36  FF  2E  16  7E  36  FF  2E  00  AC  E9  --  0922E0
0B  08  C4  83  00  64  5A  20  9A  16  5C  36  FF  2E  16  5E  --  0922F0
16  6A  36  FF  2E  00  84  E9  00  5C  11  B9  9A  08  75  C0  --  092300
06  C4  83  00  34  21  48  9A  FE  76  FF  16  68  36  FF  2E  --  092310
05  8B  16  6C  3E  C5  2E  00  00  05  C7  16  6C  3E  C5  2E  --  092320
70  3E  03  2E  E7  D1  3D  8B  06  E0  C1  1E  7F  00  FF  3D  --  092330
FF  16  6C  3E  C5  2E  04  00  85  89  16  72  1E  8E  2E  16  --  092340
B6  2C  9A  50  FC  46  8D  16  50  F4  46  8D  16  D6  EB  05  --  092350
C5  2E  21  EB  00  01  B8  05  74  C0  0B  08  C4  83  00  2C  --  092360
B2  9A  05  74  00  FC  7E  83  0B  74  00  3D  83  16  74  3E  --  092370
C9  C0  2B  00  54  12  29  9A  00  2C  CC  CD  9A  00  54  99  --  092380
46  C7  00  08  FE  46  C7  00  00  0C  C8  57  56  CB  5E  5F  --  092390
F8  46  C7  00  00  F6  46  C7  00  00  F4  46  C7  00  00  FC  --  0923A0
23  FE  46  8B  16  60  3E  C5  2E  00  01  FA  46  C7  00  00  --  0923B0
16  80  36  FF  2E  16  82  36  FF  2E  00  AC  E9  03  75  05  --  0923C0
83  00  64  5A  20  9A  16  5C  36  FF  2E  16  5E  36  FF  2E  --  0923D0
FF  2E  00  84  E9  00  5C  12  6A  9A  08  75  C0  0B  08  C4  --  0923E0
00  34  21  48  9A  FE  76  FF  16  68  36  FF  2E  16  6A  36  --  0923F0
C5  2E  00  00  05  C7  16  6C  3E  C5  2E  06  C4  83  01  FE  --  092400
D1  3D  8B  06  E0  C1  1E  7F  00  FF  3D  05  8B  16  6C  3E  --  092410
2E  06  00  85  89  16  72  1E  8E  2E  16  70  3E  03  2E  E7  --  092420
46  8D  16  50  F4  46  8D  16  D6  EB  05  FF  16  6C  3E  C5  --  092430
01  B8  05  74  C0  0B  08  C4  83  00  2C  B6  2C  9A  50  FC  --  092440
FC  7E  83  0B  74  00  3D  83  16  74  3E  C5  2E  21  EB  00  --  092450
12  29  9A  00  2C  CC  CD  9A  00  54  99  B2  9A  05  74  00  --  092460
46  C7  00  00  0E  C8  57  56  CB  5E  5F  C9  C0  2B  00  54  --  092470
36  FF  2E  FC  46  89  05  8B  16  60  3E  C5  2E  00  00  FA  --  092480
5C  36  FF  2E  16  5E  36  FF  2E  16  84  36  FF  2E  16  86  --  092490
13  1B  9A  08  75  C0  0B  08  C4  83  00  64  5A  20  9A  16  --  0924A0
FF  16  68  36  FF  2E  16  6A  36  FF  2E  00  CC  E9  00  5C  --  0924B0
83  00  00  FE  46  C7  06  C4  83  00  34  21  48  9A  FC  76  --  0924C0
2E  16  88  3E  03  2E  E7  D1  FE  7E  8B  70  7D  04  FE  7E  --  0924D0
E7  D1  FE  7E  8B  47  74  FC  46  23  05  8B  16  8A  1E  8E  --  0924E0
```

```
05 C7 16 6C 3E C5 2E 00 01 F2 45 C7 1F 16 FD 03 -- 0924F0
E0 C1 32 7F 00 FF 3D 05 8B 16 6C 3E C5 2E 00 00 -- 092500
16 70 3E 03 2E 09 E7 C1 FE 7E 8B E6 D1 35 8B 06 -- 092510
05 FF 16 6C 3E C5 2E 05 89 FE 03 16 72 1E 8E 2E -- 092520
00 00 F2 45 C7 1F 16 FD 03 E7 D1 FE 7E 8B D0 EB -- 092530
9A 50 FA 46 8D 16 50 F2 46 8D 16 8A EB FE 46 FF -- 092540
21 EB 00 01 B8 05 74 C0 0B 08 C4 83 00 2C B6 2C -- 092550
05 74 00 FA 7E 83 0B 74 00 3D 83 16 74 3E C5 2E -- 092560
2B 00 54 12 29 9A 00 2C CC CD 9A 00 54 99 B2 9A -- 092570
00 01 FE 46 C7 00 00 0C C8 57 56 CB 5E 5F C9 C0 -- 092580
C7 00 00 F6 46 C7 00 01 F4 46 C7 00 00 FC 46 C7 -- 092590
46 8B 16 60 3E C5 2E 00 00 FA 46 C7 00 00 F8 46 -- 0925A0
6A 16 8C 36 FF 2E 16 8E 36 FF 2E 75 74 05 23 FE -- 0925B0

FF 2E 01 00 68 08 C4 83 00 34 1F 2F 9A 01 6A 00 -- 0925C0
36 FF 2E 16 92 36 FF 2E 16 70 36 FF 2E 16 72 36 -- 0925D0
8D 16 0E C4 83 00 5C F6 28 9A 02 6A 01 6A 16 90 -- 0925E0
08 C4 83 00 2C B6 2C 9A 50 FC 46 8D 16 50 F4 46 -- 0925F0
16 74 3E C5 2E 21 EB 00 01 B8 05 74 C0 0B 01 FE -- 092600
00 54 99 B2 9A 05 74 00 FC 7E 83 0B 74 00 3D 83 -- 092610
CB 5E 5F C9 C0 2B 00 54 12 29 9A 00 2C CC CD 9A -- 092620
00 00 FC 46 C7 00 02 FE 46 C7 00 00 0C C8 57 56 -- 092630
C7 00 00 F8 46 C7 00 01 F6 46 C7 00 00 F4 46 C7 -- 092640
7D 74 05 23 FE 46 8B 16 60 3E C5 2E 00 00 FA 46 -- 092650
2F 9A 01 6A 01 6A 16 8C 36 FF 2E 16 8E 36 FF 2E -- 092660
8B 2E 16 72 36 FF 2E 01 00 68 08 C4 83 00 34 1F -- 092670
90 06 8B 2E 16 92 36 FF 2E 50 02 00 05 16 70 06 -- 092680
C4 83 00 5C F6 28 9A 02 6A 01 6A 50 02 00 05 16 -- 092690
00 2C B6 2C 9A 50 FC 46 8D 16 50 F4 46 8D 16 0E -- 0926A0
74 3E C5 2E 21 EB 00 01 B8 05 74 C0 0B 08 C4 83 -- 0926B0
54 99 B2 9A 05 74 00 FC 7E 83 0B 74 00 3D 83 16 -- 0926C0
5E 5F C9 C0 2B 00 54 12 29 9A 00 2C CC CD 9A 00 -- 0926D0
00 FC 46 C7 00 04 FE 46 C7 00 00 0C C8 57 56 CB -- 0926E0
00 01 F8 46 C7 00 00 F6 46 C7 00 00 F4 46 C7 00 -- 0926F0
74 05 23 FE 46 8B 16 60 3E C5 2E 00 00 FA 46 C7 -- 092700
9A 01 6A 02 6A 16 8C 36 FF 2E 16 8E 36 FF 2E 7D -- 092710
2E 16 72 36 FF 2E 01 00 68 08 C4 83 00 34 1F 2F -- 092720
06 8B 2E 16 92 36 FF 2E 50 04 00 05 16 70 06 8B -- 092730
83 00 5C F6 28 9A 02 6A 01 6A 50 04 00 05 16 90 -- 092740
2C B6 2C 9A 50 FC 46 8D 16 50 F4 46 8D 16 0E C4 -- 092750
3E C5 2E 21 EB 00 01 B8 05 74 C0 0B 08 C4 83 00 -- 092760
99 B2 9A 05 74 00 FC 7E 83 0B 74 00 3D 83 16 74 -- 092770
5F C9 C0 2B 00 54 12 29 9A 00 2C CC CD 9A 00 54 -- 092780
FC 46 C7 00 08 FE 46 C7 00 00 0C C8 57 56 CB 5E -- 092790
00 F8 46 C7 00 00 F6 46 C7 00 00 F4 46 C7 00 00 -- 0927A0
05 23 FE 46 8B 16 60 3E C5 2E 00 01 FA 46 C7 00 -- 0927B0
01 6A 03 6A 16 8C 36 FF 2E 16 8E 36 FF 2E 7D 74 -- 0927C0
16 72 36 FF 2E 01 00 68 08 C4 83 00 34 1F 2F 9A -- 0927D0
8B 2E 16 92 36 FF 2E 50 06 00 05 16 70 06 8B 2E -- 0927E0
00 5C F6 28 9A 02 6A 01 6A 50 06 00 05 16 90 06 -- 0927F0
9A 50 FC 46 8D 16 50 F4 46 8D 16 0E C4 83 01 FE -- 092800
21 EB 00 01 B8 05 74 C0 0B 08 C4 83 00 2C B6 2C -- 092810
05 74 00 FC 7E 83 0B 74 00 3D 83 16 74 3E C5 2E -- 092820
2B 00 54 12 29 9A 00 2C CC CD 9A 00 54 99 B2 9A -- 092830
16 60 3E C5 2E 00 00 0E C8 57 56 CB 5E 5F C9 C0 -- 092840
03 7C 04 FE 7E 83 00 00 FE 46 C7 FC 46 89 05 8B -- 092850
1E 8E 2E 16 88 3E 03 2E E7 D1 FE 7E 8B 00 84 E9 -- 092860
FF 2E 16 8E 36 FF 2E 27 74 FC 46 23 05 8B 16 8A -- 092870
08 C4 83 00 34 1F 2F 9A 01 6A FE 76 FF 16 8C 36 -- 092880
0E EB 00 01 F2 45 C7 1F 16 FD 03 E7 D1 FE 7E 8B -- 092890
```

```
00 68 00 00 F2 45 C7 1F 16 FD 03 E7 D1 FE 7E 8B -- 0928A0
72 16 8B 2E 16 70 06 03 2E 09 E0 C1 FE 46 8B 01 -- 0928B0
8B 2E 16 90 06 03 2E 09 E0 C1 FE 46 8B 50 52 16 -- 0928C0
C4 83 00 5C F6 28 9A 02 6A 01 6A 50 52 16 92 16 -- 0928D0
FA 46 8D 16 50 F2 46 8D 16 FF 73 E9 FE 46 FF 0E -- 0928E0
00 01 B8 05 74 C0 0B 08 C4 83 00 2C B6 2C 9A 50 -- 0928F0
00 FA 7E 83 0B 74 00 3D 83 16 74 3E C5 2E 21 EB -- 092900
54 12 29 9A 00 2C CC CD 9A 00 54 99 B2 9A 05 74 -- 092910
46 8D 16 00 00 0E C8 57 56 CB 5E 5F C9 C0 2B 00 -- 092920
72 36 FF 2E 16 68 36 FF 2E 16 6A 36 FF 2E 50 FC -- 092930
46 C7 0C C4 83 00 34 22 B9 9A 16 70 36 FF 2E 16 -- 092940
03 2E E7 D1 FE 7E 8B 39 7D 04 FE 7E 83 00 00 FE -- 092950

8B 10 74 FC 46 23 05 8B 16 8A 1E 8E 2E 16 88 3E -- 092960
8B 0E EB 00 01 F2 45 C7 1F 16 FD 03 E7 D1 FE 7E -- 092970
FE 46 FF 00 00 F2 45 C7 1F 16 FD 03 E7 D1 FE 7E -- 092980
2C B6 2C 9A 50 FA 46 8D 16 50 F2 46 8D 16 C1 EB -- 092990
3E C5 2E 21 EB 00 01 B8 05 74 C0 0B 08 C4 83 00 -- 0929A0
99 B2 9A 05 74 00 FA 7E 83 0B 74 00 3D 83 16 74 -- 0929B0
5F C9 C0 2B 00 54 12 29 9A 00 2C CC CD 9A 00 54 -- 0929C0
02 3D 05 8B 16 94 3E C5 2E EC 8B 55 57 56 CB 5E -- 0929D0
17 EB 00 5C 15 20 9A 0A 76 FF 0C 76 FF 0D 75 00 -- 0929E0
FF 0C 76 FF 0E 75 00 01 3D 05 8B 16 94 3E C5 2E -- 0929F0
CB 5E 5F C9 04 C4 83 00 4C DC 4E 9A 0A 76 01 FE -- 092A00
75 00 02 3D 05 8B 16 94 3E C5 2E EC 8B 55 57 56 -- 092A10
C5 2E 17 EB 00 5C 15 CF 9A 0A 76 FF 0C 76 FF 0D -- 092A20
0A 76 FF 0C 76 FF 0E 75 00 01 3D 05 8B 16 94 3E -- 092A30
02 C8 57 56 CB 5E 5F C9 04 C4 83 00 4C DB 46 9A -- 092A40
FF 04 C4 83 00 4C DA 7A 9A 50 FE 46 8D 16 00 00 -- 092A50
06 C4 83 00 5C 15 48 9A 0A 76 FF 0C 76 FF FE 76 -- 092A60
8B 48 7D 04 0E 7E 83 EC 8B 55 57 56 CB 5E 5F C9 -- 092A70
C5 2E 16 8A 06 8E 2E 16 88 36 03 2E E6 D1 0E 76 -- 092A80
01 05 C7 0A 7E C5 09 74 04 23 26 05 8B 16 98 3E -- 092A90
06 8E 2E 16 88 36 03 2E E6 D1 0E 76 8B 54 EB 00 -- 092AA0
7E C5 32 75 04 23 26 05 8B 16 60 3E C5 2E 16 8A -- 092AB0
98 3E C5 2E 16 88 36 C4 2E 30 EB 00 03 05 C7 0A -- 092AC0
BA 75 02 44 23 26 05 8B C2 75 04 23 26 05 8B 16 -- 092AD0
AA 75 06 44 23 26 05 8B B2 75 04 44 23 26 05 8B -- 092AE0
00 04 C8 57 56 CB 5E 5F C9 00 02 05 C7 0A 7E C5 -- 092AF0
7E 83 04 C4 83 00 4C DA 7A 9A 50 FE 46 8D 16 00 -- 092B00
8E 2E 16 88 36 03 2E E6 D1 FE 76 8B 50 7D 04 FE -- 092B10
8B 1A 74 04 23 26 05 8B 16 98 3E C5 2E 16 8A 06 -- 092B20
0F B8 16 88 36 03 2E E6 D1 FE 76 8B FC 46 89 05 -- 092B30
7E 8B 16 98 36 C4 2E 27 EB FC 46 23 04 2B 26 00 -- 092B40
26 05 8B 16 8A 1E 8E 2E 16 88 3E 03 2E E7 D1 FE -- 092B50
16 98 3E C5 2E 05 8B 16 60 3E C5 2E 07 EB 04 0B -- 092B60
00 5C 15 48 9A 0A 76 FF 0C 76 FF FE 76 FF 05 89 -- 092B70
00 24 75 4E 00 6C 32 64 00 CB 5E 5F C9 06 C4 83 -- 092B80
00 24 6A 40 00 6C 32 72 00 24 74 40 00 6C 32 4A -- 092B90
00 6C 32 59 00 6C 32 54 00 6C 32 4F 00 6C 29 F6 -- 092BA0
00 24 4D 5C 00 24 74 C0 00 24 3D 14 00 6C 32 5E -- 092BB0
46 C7 00 00 1A C8 57 56 00 24 75 4C 00 3C 86 9A -- 092BC0
FA 46 D9 9B FA 5E D9 9B 00 5C CC ED 9A 00 00 FE -- 092BD0
3E C5 2E 08 C4 83 00 5C ED F9 9A 00 5C ED 99 9A -- 092BE0
C5 2E 54 7E 00 1E 3D 05 7C 00 06 3D 05 89 20 D4 -- 092BF0
00 06 05 C7 06 7D 00 06 3D 05 8B 20 D4 3E 01 FE -- 092C00
05 C7 04 7E 00 1E 3D 05 8B 20 D4 3E C5 2E 10 EB -- 092C10
FF 2E 20 DA 36 FF 2E 35 FF 20 D4 3E C5 2E 00 1E -- 092C20
0A C4 83 00 5C 97 5E 9A 50 E6 46 8D 16 20 D8 36 -- 092C30
64 28 52 9A 50 24 68 00 6A 01 6A 50 E6 46 8D 16 -- 092C40
```

```
20 DC 3E C5 2E 05 8B 20 D4 3E C5 2E 0A C4 83 00 -- 092C50
5C 17 88 9A 14 74 00 3D 83 20 E0 3E C5 2E 05 89 -- 092C60
FE 46 89 00 5C 19 2A 9A 08 75 C0 0B FE 46 89 00 -- 092C70
C9 9B FE 46 8B 00 5C 1A 0E 9A 05 75 00 FE 7E 83 -- 092C80
0A 76 FF 0C 76 FF 08 6A EC 8B 55 57 56 CB 5E 5F -- 092C90
83 00 5C ED 6E 9A 20 E4 36 FF 2E 20 E6 36 FF 2E -- 092CA0
E0 3E C5 2E 00 00 02 C8 57 56 CB 5E 5F C9 0A C4 -- 092CB0
FF 20 F4 3E C5 2E 50 FE 46 8D 16 00 01 05 C7 20 -- 092CC0
2E 35 FF 20 EC 3E C5 2E 35 FF 20 F0 3E C5 2E 35 -- 092CD0
20 E4 36 FF 2E 20 E6 36 FF 2E 35 FF 20 DC 3E C5 -- 092CE0
64 40 D0 9A 00 D9 68 09 6A 35 FF 20 E8 3E C5 2E -- 092CF0

00 02 C8 57 56 CB 5E 5F C9 FE 46 8B 16 C4 83 00 -- 092D00
6A 50 FE 46 8D 16 00 00 05 C7 20 E0 3E C5 2E 00 -- 092D10
C9 FE 46 8B 08 C4 83 00 64 40 D0 9A 00 DA 68 02 -- 092D20
00 05 C7 20 F8 3E C5 2E EC 8B 55 57 56 CB 5E 5F -- 092D30
00 5C CC ED 9A 00 00 18 C8 57 56 CB 5E 5F C9 00 -- 092D40
E8 46 89 08 C4 83 00 5C ED F9 9A 00 5C ED 99 9A -- 092D50
7E 00 09 3D 05 7C 00 3D 83 05 89 20 FC 3E C5 2E -- 092D60
EB 00 00 05 C7 06 7D 00 3D 83 20 FC 3E C5 2E 52 -- 092D70
09 05 C7 04 7E 00 09 3D 05 8B 20 FC 3E C5 2E 10 -- 092D80
36 FF 2E 21 02 36 FF 2E 35 FF 20 FC 3E C5 2E 00 -- 092D90
16 0A C4 83 00 5C 97 5E 9A 50 EC 46 8D 16 21 00 -- 092DA0
00 64 28 52 9A 50 27 68 00 6A 01 6A 50 EC 46 8D -- 092DB0
75 00 EA 7E 83 EA 46 89 00 5C 19 6F 9A 0A C4 83 -- 092DC0
C8 57 56 CB 5E 5F C9 EA 46 8B 00 5C 1A 0E 9A 05 -- 092DD0
5C 19 6F 9A 00 01 05 C7 20 F8 3E C5 2E 00 00 02 -- 092DE0
8B 00 5C 1A 0E 9A 05 75 00 FE 7E 83 FE 46 89 00 -- 092DF0
C5 2E 00 00 02 C8 57 56 CB 5E 5F C9 FE 46 01 FE -- 092E00
83 FE 46 89 00 5C 19 6F 9A FF FF 05 C7 20 F8 3E -- 092E10
5E 5F C9 FE 46 8B 00 5C 1A 0E 9A 05 75 00 FE 7E -- 092E20
00 00 05 C7 20 F8 3E C5 2E 00 00 02 C8 57 56 CB -- 092E30
0E 9A 05 75 00 FE 7E 83 FE 46 89 00 5C 19 6F 9A -- 092E40
00 00 02 C8 57 56 CB 5E 5F C9 FE 46 8B 00 5C 1A -- 092E50
F3 68 03 6A 35 FF 20 D4 3E C5 2E 50 FE 46 8D 16 -- 092E60
CB 5E 5F C9 FE 46 8B 0A C4 83 00 64 40 D0 9A 03 -- 092E70
03 F4 68 02 6A 50 FE 46 8D 16 00 00 02 C8 57 56 -- 092E80
56 CB 5E 5F C9 FE 46 8B 08 C4 83 00 64 40 D0 9A -- 092E90
FF 20 FC 3E C5 2E 50 FE 46 8D 16 00 00 02 C8 57 -- 092EA0
40 D0 9A 03 F5 68 04 6A 35 FF 20 F8 3E C5 2E 35 -- 092EB0
02 C8 57 56 CB 5E 5F C9 FE 46 8B 0C C4 83 00 64 -- 092EC0
22 76 FF 24 76 FF 26 76 FF 50 FE 46 8D 16 00 00 -- 092ED0
FF 18 76 FF 1A 76 FF 1C 76 FF 1E 76 FF 20 76 FF -- 092EE0
76 FF 0E 76 FF 10 76 FF 12 76 FF 14 76 FF 16 76 -- 092EF0
C4 83 00 64 40 D0 9A 03 F6 68 11 6A 0A 76 FF 0C -- 092F00
1C 76 FF 1A 74 00 28 7E 83 20 75 00 FE 7E 83 26 -- 092F10
9A 12 76 FF 14 76 FF 16 76 FF 18 76 FF 1A 76 FF -- 092F20
57 56 CB 5E 5F C9 FE 46 8B 0C C4 83 00 5C 1D 41 -- 092F30
86 C6 20 FF 7D 86 C6 20 FF 7C 86 C6 00 00 8E C8 -- 092F40
20 81 46 C6 20 80 46 C6 20 FF 7F 86 C6 20 FF 7E -- 092F50
20 85 46 C6 20 84 46 C6 20 83 46 C6 20 82 46 C6 -- 092F60
20 89 46 C6 20 88 46 C6 20 87 46 C6 20 86 46 C6 -- 092F70
20 8D 46 C6 20 8C 46 C6 20 8B 46 C6 20 8A 46 C6 -- 092F80
00 91 46 C6 20 90 46 C6 20 8F 46 C6 20 8E 46 C6 -- 092F90
20 95 46 C6 20 94 46 C6 20 93 46 C6 20 92 46 C6 -- 092FA0
20 99 46 C6 20 98 46 C6 20 97 46 C6 20 96 46 C6 -- 092FB0
20 9D 46 C6 20 9C 46 C6 20 9B 46 C6 20 9A 46 C6 -- 092FC0
20 A1 46 C6 20 A0 46 C6 20 9F 46 C6 20 9E 46 C6 -- 092FD0
20 A5 46 C6 20 A4 46 C6 20 A3 46 C6 20 A2 46 C6 -- 092FE0
20 A9 46 C6 20 A8 46 C6 00 A7 46 C6 20 A6 46 C6 -- 092FF0
```

```
46 C6 20 AC 46 C6 20 AB 46 C6 20 AA 46 C6 01 FE -- 093000
46 C6 20 B0 46 C6 20 AF 46 C6 20 AE 46 C6 20 AD -- 093010
46 C6 20 B4 46 C6 20 B3 46 C6 20 B2 46 C6 20 B1 -- 093020
46 C6 20 B8 46 C6 20 B7 46 C6 20 B6 46 C6 20 B5 -- 093030
46 C6 20 BC 46 C6 20 BB 46 C6 20 BA 46 C6 20 B9 -- 093040
46 C6 20 C0 46 C6 20 BF 46 C6 20 BE 46 C6 00 BD -- 093050
46 C6 20 C4 46 C6 20 C3 46 C6 20 C2 46 C6 20 C1 -- 093060
46 C6 20 C8 46 C6 20 C7 46 C6 20 C6 46 C6 20 C5 -- 093070
46 C6 20 CC 46 C6 20 CB 46 C6 20 CA 46 C6 20 C9 -- 093080
46 C6 20 D0 46 C6 20 CF 46 C6 20 CE 46 C6 20 CD -- 093090

46 C6 20 D4 46 C6 00 D3 46 C6 20 D2 46 C6 20 D1 -- 0930A0
46 C6 20 D8 46 C6 20 D7 46 C6 20 D6 46 C6 20 D5 -- 0930B0
46 C6 20 DC 46 C6 20 DB 46 C6 20 DA 46 C6 20 D9 -- 0930C0
46 C6 20 E0 46 C6 20 DF 46 C6 20 DE 46 C6 20 DD -- 0930D0
46 C6 20 E4 46 C6 20 E3 46 C6 20 E2 46 C6 20 E1 -- 0930E0
46 C6 20 E8 46 C6 20 E7 46 C6 20 E6 46 C6 20 E5 -- 0930F0
46 C6 20 EC 46 C6 20 EB 46 C6 20 EA 46 C6 00 E9 -- 093100
46 C6 20 F0 46 C6 20 EF 46 C6 20 EE 46 C6 20 ED -- 093110
46 C6 20 F4 46 C6 20 F3 46 C6 20 F2 46 C6 20 F1 -- 093120
46 C6 20 F8 46 C6 20 F7 46 C6 20 F6 46 C6 20 F5 -- 093130
46 C6 20 FC 46 C6 20 FB 46 C6 20 FA 46 C6 20 F9 -- 093140
8B 21 04 3E C5 2E 00 FF 46 C6 20 FE 46 C6 20 FD -- 093150
14 F4 F5 9A 57 21 06 36 FF 2E 0E 75 FF FF 3D 05 -- 093160
21 0A 36 FF 2E 35 FF 20 D4 3E C5 2E 04 C4 83 00 -- 093170
00 5C 97 5E 9A 50 FF 7C 86 8D 16 21 08 36 FF 2E -- 093180
3F 77 00 02 3D 40 05 8B 20 F8 3E C5 2E 0A C4 83 -- 093190
2E 1C 89 1C 7D 1C 95 1C 77 A7 FF 2E D8 8B E0 D1 -- 0931A0
21 12 36 FF 2E 16 EB 21 0C 36 FF 2E 21 0E 36 FF -- 0931B0
14 36 FF 2E 21 16 36 FF 2E 0A EB 21 10 36 FF 2E -- 0931C0
16 08 C4 83 00 64 5B B4 9A 50 FF 72 86 8D 16 21 -- 0931D0
16 21 18 36 FF 2E 21 1A 36 FF 2E 50 FF 72 86 8D -- 0931E0
F8 3E C5 2E 0C C4 83 00 5C 97 5E 9A 50 92 46 8D -- 0931F0
2E 35 FF 20 FC 3E C5 2E 1E 74 00 3D 83 20 01 FE -- 093200
5E 9A 50 A8 46 8D 16 21 1C 36 FF 2E 21 1E 36 FF -- 093210
C5 2E 50 FF 7C 86 8D 16 00 6A 0A C4 83 00 5C 97 -- 093220
3E C5 2E 08 C4 83 00 14 F5 9B 9A 35 FF 21 04 3E -- 093230
5F C9 C0 2B 02 C4 83 00 14 FA 45 9A 35 FF 21 04 -- 093240
4D 9A 35 FF 21 04 3E C5 2E EC 8B 55 57 56 CB 5E -- 093250
2B FF FF 05 C7 21 04 3E C5 2E 02 C4 83 00 14 F8 -- 093260
05 8B 0A 7E C5 00 08 00 C8 57 56 CB 5E 5F C9 C0 -- 093270
0E 46 8B 00 00 DC 46 C7 01 AD E9 03 7F 00 02 3D -- 093280
89 14 56 8B 12 46 8B FA 56 89 F8 46 89 10 56 8B -- 093290
F8 0D 86 8D E0 46 89 48 48 05 8B F6 56 89 F4 46 -- 0932A0
8B 00 00 E2 46 C7 F8 0A 96 89 F8 08 86 89 5A 16 -- 0932B0
45 D9 9B F4 7E C5 00 BD E9 03 7C E0 46 3B E2 46 -- 0932C0
ED 99 9A 08 45 D9 9B F8 7E C5 00 5C ED 99 9A 08 -- 0932D0
7E C5 00 5C ED 99 9A 04 45 D9 9B F4 7E C5 00 5C -- 0932E0
05 D9 9B F4 7E C5 00 5C ED 99 9A 04 45 D9 9B F8 -- 0932F0
00 5C ED 99 9A 05 D9 9B F8 7E C5 00 5C ED 99 9A -- 093300
9B EE D9 9B FC 5E D9 9B 30 C4 83 00 5C 1F 06 9A -- 093310
DC 9B 21 20 26 DC 2E 9B FC 46 D9 9B F8 00 9E DD -- 093320
2E 9B FC 46 D9 9B 0C 76 00 5C ED 94 9A F8 00 9E -- 093330
21 20 26 DC 2E 9B FC 46 D9 9B 0D EB 21 20 26 DC -- 093340
0E 73 00 5C ED 94 9A 21 28 1E DC 2E 9B E0 D9 9B -- 093350
BE C5 07 EB 00 05 C6 F8 08 BE C5 00 01 DC 46 C7 -- 093360
04 F4 46 83 04 F8 46 83 E2 46 FF 01 05 C6 F8 08 -- 093370
00 A5 E9 03 75 00 DC 7E 83 FF 38 E9 F8 08 86 FF -- 093380
16 FD 03 4F E0 7E 8B 02 E0 46 83 00 01 DE 46 C7 -- 093390
F8 08 86 89 5A 16 F8 0D 86 8D 01 F8 0C 85 C6 1F -- 0933A0
```

648

```
E8 46 89 00 04 05 10 56 8B 0E 46 8B F8 0A 96 89 -- 0933B0
05 14 56 8B 12 46 8B F2 56 89 F0 46 89 EA 56 89 -- 0933C0
46 C7 EE 56 89 EC 46 89 E6 56 89 E4 46 89 00 04 -- 0933D0
80 F8 08 BE C5 42 7D E0 46 3B E2 46 8B 00 01 E2 -- 0933E0
C5 05 D9 9B F0 7E C5 18 74 DE 46 3B 28 74 00 3D -- 0933F0
E4 7E C5 05 D9 9B EC 7E C5 1D D9 9B E8 7E 01 FE -- 093400
46 FF DE 46 FF 04 E4 46 83 04 E8 46 83 1D D9 9B -- 093410
8B B6 EB 04 EC 46 83 04 F0 46 83 F8 08 86 FF E2 -- 093420
2C C8 57 56 CB 5E 5F C9 9B 05 89 0A 7E C5 DE 46 -- 093430

DD 9B 0A 5E DD 9B 0A 6E DC 9B 1A 46 DD 9B 00 00 -- 093440
DC 9B 1A 46 DD 9B 12 5E DD 9B 12 6E DC 9B 22 46 -- 093450
DD 9B 32 6E DC 9B 22 46 DD 9B 2A 5E DD 9B 2A 6E -- 093460
DD 9B D4 5E DD 9B 12 4E DC 9B 12 46 DD 9B 32 5E -- 093470
9A 00 5C ED 99 9A D4 46 DC 9B 0A 4E DC 9B 0A 46 -- 093480
9B 32 46 DD 9B DC 5E DD 9B 08 C4 83 00 64 4E FE -- 093490
9B 2A 4E DC 9B 2A 46 DD 9B E4 5E DD 9B 32 4E DC -- 0934A0
08 C4 83 00 64 4E FE 9A 00 5C ED 99 9A E4 46 DC -- 0934B0
32 4E DC 9B 12 46 DD 9B EC 5E DD 9B DC 4E DC 9B -- 0934C0
F4 46 DC 9B 2A 4E DC 9B 0A 46 DD 9B F4 5E DD 9B -- 0934D0
C4 83 00 64 52 FE 9A 00 5C ED 99 9A EC 76 DC 9B -- 0934E0
FC 46 D9 9B F4 5E DD 9B EE D9 9B FC 5E D9 9B 08 -- 0934F0
EB FC 46 D9 9B 06 76 00 5C ED 94 9A F4 5E DC 9B -- 093500
FC 46 D9 9B FC 5E D9 9B E0 D9 9B FC 46 D9 9B 07 -- 093510
00 85 E9 03 72 00 5C ED 94 9A 21 28 1E DC 2E 9B -- 093520
9B 32 66 DC 9B 12 46 DD 9B F4 5E DD 9B EE D9 9B -- 093530
DC 9B 12 46 DD 9B 0A 76 00 5C ED 94 9A F4 5E DC -- 093540
9B E0 D9 9B 32 66 DC 9B 12 46 DD 9B 0B EB 32 66 -- 093550
0A 46 DD 9B 4F 73 00 5C ED 94 9A 21 28 1E DC 2E -- 093560
46 DD 9B 11 76 00 5C ED 94 9A 21 30 1E DC 2E 9B -- 093570
DD 9B 71 76 00 5C ED 94 9A 21 30 1E DC 2E 9B 2A -- 093580
9B 11 77 00 5C ED 94 9A 21 30 1E DC 2E 9B 0A 46 -- 093590
4F 77 00 5C ED 94 9A 21 30 1E DC 2E 9B 2A 46 DD -- 0935A0
9B 12 46 DD 9B 4A EB FC 46 D9 9B 50 EB EE D9 9B -- 0935B0
32 46 DD 9B 11 76 00 5C ED 94 9A 21 30 1E DC 2E -- 0935C0
46 DD 9B 22 76 00 5C ED 94 9A 21 30 1E DC 2E 9B -- 0935D0
DD 9B C2 77 00 5C ED 94 9A 21 30 1E DC 2E 9B 12 -- 0935E0
9B B1 76 00 5C ED 94 9A 21 30 1E DC 2E 9B 32 46 -- 0935F0
00 6C 2D B0 CB 5E 5F C9 9B 21 20 06 DD 2E 01 FE -- 093600
00 6C 2D B6 00 6C 2D A4 00 6C 2D A6 00 6C 2D 4E -- 093610
00 6C 2D A2 00 6C 2D AC 00 6C 2D AA 00 6C 2D A8 -- 093620
00 6C 2D B4 00 6C 2D 53 00 6C 2D B2 00 6C 2D AE -- 093630
00 6C 2D 78 00 6C 2D 72 00 6C 2D 6B 00 6C 2D 58 -- 093640
40 09 21 FB 54 44 2D 18 00 6C 2D 8F 00 6C 2D 7D -- 093650
00 00 00 00 00 00 00 00 3F 91 EB 85 1E B8 51 EB -- 093660
00 5C 7B F8 9A 50 B0 46 8D 16 00 00 5A C8 57 56 -- 093670
04 C4 83 00 5C E0 79 9A 50 D8 46 8D 16 04 C4 83 -- 093680
D8 46 8B 04 C4 83 00 1C FC 83 9A 50 D8 46 8D 16 -- 093690
A8 5E D9 9B 02 C4 83 00 5C ED A7 9A 50 B0 46 2B -- 0936A0
9B 02 C4 83 00 5C ED A7 9A 50 B2 46 2B DA 46 8B -- 0936B0
9A 50 A8 46 8D 16 00 6A 50 A6 46 8D 16 AC 5E D9 -- 0936C0
5E 5F C9 9B 00 44 57 C9 9A 0A C4 83 00 2C 25 F5 -- 0936D0
D8 46 8D 16 00 00 D6 46 C7 00 00 30 C8 57 56 CB -- 0936E0
05 8B 2B 6C 3E C5 2E 04 C4 83 00 5C E0 79 9A 50 -- 0936F0
83 00 34 B0 FC 9A 50 D8 46 8D 16 0D 75 00 0A 3D -- 093700
D9 9B 1D D9 9B 2B 70 3E C5 2E E8 46 D9 9B 04 C4 -- 093710
7D 02 D4 7E 83 00 00 D4 46 C7 04 5D D9 9B EC 46 -- 093720
D4 7E 8B 0C 46 8E 0A 76 03 02 E6 C1 D4 76 8B 7C -- 093730
05 D9 9B 2B 72 1E 8E 2E 2B 70 3E 03 2E 02 E7 C1 -- 093740
E7 C1 D4 7E 8B 4C 73 00 5C ED 94 9A 1C D8 26 9B -- 093750
```

```
7E 8B D0 5E D9 9B 05 D9 9B 0C 5E 8E 0A 7E 03 02 -- 093760
D9 9B 2B 72 1E 8E 2E 2B 70 3E 03 2E 02 E7 C1 D4 -- 093770
1D D9 9B 0C 5E 8E 0A 7E 03 02 E7 C1 D4 7E 8B 05 -- 093780
2B 72 1E 8E 2E 2B 70 3E 03 2E 02 E7 C1 D4 7E 8B -- 093790
3E C5 2E FF 7E E9 D4 46 FF 1D D9 9B D0 46 D9 9B -- 0937A0
72 36 FF 2E 50 D6 46 8D 16 1F 74 00 3D 83 2B 74 -- 0937B0
44 08 55 9A 0A 76 FF 0C 76 FF 2B 70 36 FF 2E 2B -- 0937C0
36 FF 2E 00 6A 50 D6 46 8D 16 1F EB 0C C4 83 00 -- 0937D0

1B 57 9A 0A 76 FF 0C 76 FF 2B 70 36 FF 2E 2B 72 -- 0937E0
C8 57 56 CB 5E 5F C9 9B D6 46 8B 0E C4 83 00 2C -- 0937F0
83 2B 74 3E C5 2E 00 00 FE 46 C7 00 00 02 01 FE -- 093800
C4 83 00 44 06 CA 9A 50 FE 46 8D 16 0F 74 00 3D -- 093810
83 00 34 EF B7 9A 00 6A 50 FE 46 8D 16 0F EB 04 -- 093820
C7 00 00 02 C8 57 56 CB 5E 5F C9 FE 46 8B 06 C4 -- 093830
8D 16 0F 74 00 3D 83 2B 74 3E C5 2E 00 00 FE 46 -- 093840
46 8D 16 0F EB 04 C4 83 00 44 0A A0 9A 50 FE 46 -- 093850
C9 FE 46 8B 06 C4 83 00 2C 11 03 9A 00 6A 50 FE -- 093860
8D 16 00 00 C6 46 C7 00 00 3A C8 57 56 CB 5E 5F -- 093870
2B 6C 3E C5 2E 04 C4 83 00 5C E0 79 9A 50 D8 46 -- 093880
34 B0 FC 9A 50 D8 46 8D 16 0D 75 00 0A 3D 05 8B -- 093890
EC 46 D9 9B D0 5E D9 9B E8 46 D9 9B 04 C4 83 00 -- 0938A0
8D 16 14 74 00 3D 83 2B 74 3E C5 2E D4 5E D9 9B -- 0938B0
08 C4 83 00 44 0D A8 9A 50 D0 46 8D 16 50 C6 46 -- 0938C0
C5 2E C8 5E D9 9B 05 D9 9B 2B 78 3E C5 2E 31 EB -- 0938D0
6A 50 C6 46 8D 16 CC 5E D9 9B 05 D9 9B 2B 7C 3E -- 0938E0
00 2C 2A FA 9A 50 D0 46 8D 16 50 C8 46 8D 16 00 -- 0938F0
00 02 C8 57 56 CB 5E 5F C9 9B C6 46 8B 0E C4 83 -- 093900
13 74 00 3D 83 2B 74 3E C5 2E 00 00 FE 46 C7 00 -- 093910
00 44 13 99 9A 0A 76 FF 0C 76 FF 50 FE 46 8D 16 -- 093920
0C 76 FF 2B 80 36 FF 2E 2B 82 36 FF 2E 00 CC E9 -- 093930
9B 14 75 C0 0B 08 C4 83 00 64 5A 20 9A 0A 76 FF -- 093940
EE D9 9B 1D D9 9B 2B 84 3E C5 2E 2B 88 06 DF 2E -- 093950
0C 76 FF 2B 8E 36 FF 2E 2B 90 36 FF 2E 00 80 E9 -- 093960
9B 08 75 C0 0B 08 C4 83 00 64 5A 20 9A 0A 76 FF -- 093970
94 36 FF 2E 2B 96 36 FF 2E CE EB 2B 92 06 DF 2E -- 093980
0B 08 C4 83 00 64 5A 20 9A 0A 76 FF 0C 76 FF 2B -- 093990
2E 9B 1D D9 9B 2B 84 3E C5 2E EE D9 9B 13 75 C0 -- 0939A0
2B 9A 36 FF 2E 2B 9C 36 FF 2E 2D EB 2B 98 06 DF -- 0939B0
C0 0B 08 C4 83 00 64 5A 20 9A 0A 76 FF 0C 76 FF -- 0939C0
DF 2E 9B 1D D9 9B 2B 84 3E C5 2E EE D9 9B 30 75 -- 0939D0
50 FE 46 8D 16 1D D9 9B 2B 8A 3E C5 2E 2B 9E 06 -- 0939E0
83 00 5C 25 39 9A 2B 84 36 FF 2E 2B 86 36 FF 2E -- 0939F0
28 C8 57 56 CB 5E 5F C9 9B FE 46 8B 08 C4 01 FE -- 093A00
44 21 BD 9A 07 74 00 3D 83 2B 74 3E C5 2E 00 00 -- 093A10
04 C4 83 00 5C E0 79 9A 50 D8 46 8D 16 4D EB 00 -- 093A20
2E 02 C4 83 00 5C ED A7 9A 50 D8 46 2B 02 00 B8 -- 093A30
A7 9A 50 DA 46 2B 01 80 B8 1D D9 9B 2B 84 3E C5 -- 093A40
FF 2E 1D D9 9B 2B 8A 3E C5 2E 02 C4 83 00 5C ED -- 093A50
04 C4 83 00 5C 25 39 9A 2B 84 36 FF 2E 2B 86 36 -- 093A60
50 E0 46 8D 16 00 00 28 C8 57 56 CB 5E 5F C9 9B -- 093A70
00 6A 0E 76 FF 10 76 FF 04 C4 83 00 2C 20 49 9A -- 093A80
46 8B 0A C4 83 00 2C 25 F5 9A 0A 76 FF 0C 76 FF -- 093A90
49 9A 50 F0 46 8D 16 00 F0 E9 03 74 0E 46 0B 10 -- 093AA0
9B F0 46 D9 9B 2B A0 3E C5 2E 04 C4 83 00 2C 20 -- 093AB0
D9 9B 2B A4 3E C5 2E 16 77 00 5C ED 94 9A 1D D8 -- 093AC0
9B 00 BA E9 03 77 00 5C ED 94 9A 1D D8 9B F4 46 -- 093AD0
9B 05 D9 9B 0A 7E C5 D8 5E DD 9B 2B 92 06 DF 2E -- 093AE0
2B 88 06 DF 2E 9B 0E 75 00 5C ED 94 9A D8 5E DC -- 093AF0
DD 9B 2B 88 06 DF 2E 9B 70 EB 1D D9 9B 0A 7E C5 -- 093B00
```

650

```
5C ED 94 9A D8 5E DC 9B 05 D9 9B 0A 7E C5 D8 5E -- 093B10
9E 06 DF 2E 9B D5 EB 2B 92 06 DF 2E 9B 08 75 00 -- 093B20
D8 5E DC 9B 04 45 D9 9B 0A 7E C5 D8 5E DD 9B 2B -- 093B30
9B 22 EB 2B 98 06 DF 2E 9B 08 75 00 5C ED 94 9A -- 093B40
04 45 D9 9B 0A 7E C5 D8 5E DD 9B 2B 98 06 DF 2E -- 093B50
9E 06 DF 2E 9B 21 75 00 5C ED 94 9A D8 5E DC 9B -- 093B60
00 6A 0E 76 FF 10 76 FF 04 5D D9 9B 0A 7E C5 2B -- 093B70

F0 46 8D 16 0A C4 83 00 2C 25 F5 9A 57 0C 76 FF -- 093B80
57 56 CB 5E 5F C9 9B 04 C4 83 00 2C 20 49 9A 50 -- 093B90
C4 83 00 34 ED BA 9A 50 F0 46 8D 16 00 00 18 C8 -- 093BA0
46 DD 9B E8 5E DD 9B F0 66 D8 9B F4 46 D9 9B 04 -- 093BB0
57 56 CB 5E 5F C9 9B E8 76 DC 9B 0A 66 DC 9B 12 -- 093BC0
3D 83 2B 74 3E C5 2E 00 00 BA 46 C7 00 00 52 C8 -- 093BD0
04 C4 83 00 44 0F 62 9A 50 BA 46 8D 16 10 74 00 -- 093BE0
04 C4 83 00 34 EE 9B 9A 50 CC 46 8D 16 01 41 E9 -- 093BF0
9A CC 46 D9 9B 00 5C ED 99 9A D0 46 D9 9B 01 FE -- 093C00
B6 5E D9 9B 10 C4 83 00 5C 26 62 9A 00 5C ED 99 -- 093C10
DC 5E D9 9B B6 4E D8 9B 05 D9 9B 2B A8 3E C5 2E -- 093C20
E0 5E D9 9B B6 4E D8 9B 05 D9 9B 2B AC 3E C5 2E -- 093C30
6A 50 F4 46 8D 16 50 F8 46 8D 16 50 BA 46 8D 16 -- 093C40
3D BA 9A 01 90 68 06 6A 35 FF 2B B0 3E C5 2E 05 -- 093C50
76 D8 9B F8 66 D8 9B DC 46 D9 9B 14 C4 83 00 64 -- 093C60
E0 D9 9B AE 66 DC 9B DC 46 D9 9B AE 5E DD 9B F4 -- 093C70
F4 76 D8 9B FC 66 D8 9B E0 46 D9 9B BC 5E D9 9B -- 093C80
9B E0 D9 9B AE 66 DC 9B E0 46 D9 9B AE 5E DD 9B -- 093C90
16 EC 5E D9 9B F0 56 D9 9B F4 46 D9 9B C0 5E D9 -- 093CA0
00 2C 27 8A 9A 50 BC 46 8D 16 00 6A 50 BA 46 8D -- 093CB0
2E E4 5E D9 9B 05 D9 9B 2B A8 3E C5 2E 0A C4 83 -- 093CC0
50 C4 46 8D 16 E8 5E D9 9B 05 D9 9B 2B AC 3E C5 -- 093CD0
46 D9 9B 08 C4 83 00 34 EE EE 9A 50 E4 46 8D 16 -- 093CE0
D9 9B 07 73 00 5C ED 94 9A 2B B4 1E DC 2E 9B C4 -- 093CF0
9A 2B B4 1E DC 2E 9B C8 46 D9 9B C4 5E D9 9B EE -- 093D00
46 8D 16 C8 5E D9 9B EE D9 9B 07 73 00 5C ED 94 -- 093D10
57 9A 50 C4 46 8D 16 50 EC 46 8D 16 00 6A 50 BA -- 093D20
57 56 CB 5E 5F C9 9B BA 46 8B 0E C4 83 00 2C 13 -- 093D30
ED 9A 08 74 00 3D 83 2B 74 3E C5 2E 00 00 52 C8 -- 093D40
00 34 EE 9B 9A 50 CC 46 8D 16 01 11 E9 00 44 1F -- 093D50
CC 46 D9 9B 00 5C ED 99 9A D0 46 D9 9B 04 C4 83 -- 093D60
5E D9 9B 10 C4 83 00 5C 26 62 9A 00 5C ED 99 9A -- 093D70
5E D9 9B B6 4E D8 9B 05 D9 9B 2B A8 3E C5 2E B6 -- 093D80
5E D9 9B B6 4E D8 9B 05 D9 9B 2B AC 3E C5 2E DC -- 093D90
50 F4 46 8D 16 50 F8 46 8D 16 50 BA 46 8D 16 E0 -- 093DA0
BA 9A 01 90 68 06 6A 35 FF 2B B0 3E C5 2E 05 6A -- 093DB0
D8 9B F8 66 D8 9B DC 46 D9 9B 14 C4 83 00 64 3D -- 093DC0
D9 9B AE 66 DC 9B DC 46 D9 9B AE 5E DD 9B F4 76 -- 093DD0
76 D8 9B FC 66 D8 9B E0 46 D9 9B BC 5E D9 9B E0 -- 093DE0
E0 D9 9B AE 66 DC 9B E0 46 D9 9B AE 5E DD 9B F4 -- 093DF0
D9 9B F0 56 D9 9B F4 46 D9 9B C0 5E D9 9B 01 FE -- 093E00
42 9A 50 BC 46 8D 16 00 6A 50 BA 46 8D 16 EC 5E -- 093E10
D9 9B 05 D9 9B 2B A8 3E C5 2E 0A C4 83 00 2C 29 -- 093E20
8D 16 E8 5E D9 9B 05 D9 9B 2B AC 3E C5 2E E4 5E -- 093E30
08 C4 83 00 34 EE EE 9A 50 E4 46 8D 16 50 C4 46 -- 093E40
C4 46 8D 16 50 EC 46 8D 16 00 6A 50 BA 46 8D 16 -- 093E50
57 56 CB 5E 5F C9 9B 0E C4 83 00 2C 15 68 9A 50 -- 093E60
9B EC 5E D9 9B 10 45 D9 9B 0A 7E C5 00 00 48 C8 -- 093E70
34 EE 9B 9A 50 D8 46 8D 16 E8 5E D9 9B 14 45 D9 -- 093E80
C4 83 00 34 ED BA 9A 50 B8 46 8D 16 04 C4 83 00 -- 093E90
9B 05 76 00 5C ED 94 9A D8 5E D8 9B EE D9 9B 04 -- 093EA0
9B EE D9 9B C8 5E D9 9B D8 46 D9 9B 04 EB EE D9 -- 093EB0
```

651

```
9B 04 EB EE D9 9B 05 76 00 5C ED 94 9A E0 5E D8 -- 093EC0
9B 05 D9 9B 2B A0 3E C5 2E D0 5E D9 9B E0 46 D9 -- 093ED0
9B 2B A0 3E C5 2E 0A 73 00 5C ED 94 9A DC 5E D8 -- 093EE0
A4 3E C5 2E CC 5E D9 9B DC 46 D9 9B 04 EB 05 D9 -- 093EF0
2E 0A 73 00 5C ED 94 9A E4 5E D8 9B 05 D9 9B 2B -- 093F00
5E D9 9B E4 46 D9 9B 04 EB 05 D9 9B 2B A4 3E C5 -- 093F10

5C ED 94 9A C8 5E D8 9B 10 45 D9 9B 0A 7E C5 D4 -- 093F20
C8 46 D9 9B 04 EB 10 45 D9 9B 0A 7E C5 09 76 00 -- 093F30
9A CC 5E D8 9B 10 45 D9 9B 10 5D D9 9B 0A 7E C5 -- 093F40
9B 04 EB 10 45 D9 9B 0A 7E C5 09 73 00 5C ED 94 -- 093F50
D8 9B 14 45 D9 9B 10 5D D9 9B 0A 7E C5 CC 46 D9 -- 093F60
14 45 D9 9B 0A 7E C5 09 76 00 5C ED 94 9A D0 5E -- 093F70
45 D9 9B 14 5D D9 9B 0A 7E C5 D0 46 D9 9B 04 EB -- 093F80
9B 0A 7E C5 09 73 00 5C ED 94 9A D4 5E D8 9B 14 -- 093F90
14 5D D9 9B 0A 7E C5 D4 46 D9 9B 04 EB 14 45 D9 -- 093FA0
C5 15 75 00 5C ED 94 9A 10 5D D8 9B EC 46 D9 9B -- 093FB0
75 00 5C ED 94 9A 14 5D D8 9B E8 46 D9 9B 0A 7E -- 093FC0
9B F8 5E D9 9B 10 45 D9 9B 0A 7E C5 00 D3 E9 03 -- 093FD0
F8 46 8D 16 50 F0 46 8D 16 FC 5E D9 9B 14 45 D9 -- 093FE0
DC 2E 9B F0 46 D9 9B 08 C4 83 00 34 EF 50 9A 50 -- 093FF0
83 00 5C ED F9 9A 00 5C ED 99 9A 2B BC 06 01 FE -- 094000
BC 06 DC 2E 9B F4 46 D9 9B 05 89 0A 7E C5 08 C4 -- 094010
7E C5 08 C4 83 00 5C ED F9 9A 00 5C ED 99 9A 2B -- 094020
5C ED 94 9A D8 5E D8 9B F8 46 D9 9B 02 45 89 0A -- 094030
5E D8 9B F8 46 D9 9B 13 EB B8 46 D9 9B 06 75 00 -- 094040
5C ED 99 9A BC 46 D9 9B 16 75 00 5C ED 94 9A DC -- 094050
D9 9B 05 89 0A 7E C5 08 C4 83 00 5C ED F9 9A 00 -- 094060
46 D9 9B 06 75 00 5C ED 94 9A E0 5E D8 9B FC 46 -- 094070
00 5C ED 94 9A E4 5E D8 9B FC 46 D9 9B 13 EB C0 -- 094080
00 5C ED F9 9A 00 5C ED 99 9A C4 46 D9 9B 17 75 -- 094090
86 9A CB 5E 5F C9 9B 02 45 89 0A 7E C5 08 C4 83 -- 0940A0
90 9C 00 3C 90 98 00 3C AE 54 00 6C 31 AE 00 3C -- 0940B0
00 6C 31 BA 03 84 00 6C 31 B6 00 6C 31 8A 00 3C -- 0940C0
00 6C 31 A6 02 8A 00 6C 31 9D FC 7C 00 6C 31 94 -- 0940D0
0D DC 00 6C 0D D4 00 3C 90 7E 00 3C 90 7A FD 76 -- 0940E0
00 00 00 00 00 00 00 00 00 00 00 3C F5 A4 00 6C -- 0940F0
FF C0 46 C7 00 00 D6 C8 57 56 3F E0 00 00 00 00 -- 094100
FF 46 86 C7 80 00 FF 5A 86 C7 00 00 92 46 C7 FF -- 094110
76 FF 00 00 FF 3A 86 C7 00 00 FF 42 86 C7 00 00 -- 094120
7E C5 FF 2A 9E DD 9B 02 C4 83 00 5C ED AF 9A C0 -- 094130
2A B6 DC 9B 02 C4 83 00 5C ED AF 9A 1A 75 FF 12 -- 094140
5C ED AF 9A 18 75 FF 12 7E C5 FF 32 9E DD 9B FF -- 094150
C0 76 FF B8 5E DD 9B FF 32 86 DC 9B 02 C4 83 00 -- 094160
12 7E C5 FF 2A 9E DD 9B 02 C4 83 00 5C ED AF 9A -- 094170
FF 2A B6 DC 9B 02 C4 83 00 5C ED AF 9A 1E 75 FF -- 094180
00 5C ED AF 9A 1C 75 FF 12 7E C5 FF 32 9E DD 9B -- 094190
9B EE D9 9B B0 5E DD 9B FF 32 86 DC 9B 02 C4 83 -- 0941A0
DC 9B 35 22 26 DC 2E 9B B0 46 DD 9B FF 32 9E DD -- 0941B0
2E 9B B0 46 DD 9B 0C 76 00 5C ED 94 9A FF 32 9E -- 0941C0
35 22 26 DC 2E 9B B0 46 DD 9B 0D EB 35 22 26 DC -- 0941D0
07 73 00 5C ED 94 9A 35 2A 1E DC 2E 9B E0 D9 9B -- 0941E0
9B EE D9 9B 00 01 AC 46 C7 05 EB 00 00 AC 46 C7 -- 0941F0
35 22 26 DC 2E 9B B8 46 DD 9B FF 32 9E DD 01 FE -- 094200
B8 46 DD 9B 0C 76 00 5C ED 94 9A FF 32 9E DC 9B -- 094210
26 DC 2E 9B B8 46 DD 9B 0D EB 35 22 26 DC 2E 9B -- 094220
00 5C ED 94 9A 35 2A 1E DC 2E 9B E0 D9 9B 35 22 -- 094230
46 8D 00 01 AE 46 C7 05 EB 00 00 AE 46 C7 07 73 -- 094240
8B 16 7E C5 16 76 C4 CC 56 89 CA 46 89 5A 16 CE -- 094250
04 2B 26 02 45 8B AA 46 89 40 04 44 2B 26 06 45 -- 094260
```

652

```
06 55 8B 04 45 8B 1A 7E C5 1A 76 C4 A8 46 89 40 -- 094270
44 86 89 00 D2 83 00 01 05 02 54 1B 26 04 2B 26 -- 094280
05 0A 54 1B 26 08 44 2B 26 0E 55 8B 0C 45 8B FF -- 094290
E9 03 75 00 AE 7E 83 FF 40 86 89 00 D2 83 00 01 -- 0942A0
4E A1 9A 50 40 40 10 45 8B 12 7E C5 02 6A 00 E9 -- 0942B0

56 89 C2 46 89 C8 56 89 C6 46 89 04 C4 83 00 64 -- 0942C0
00 02 05 C7 20 7E C5 0A 75 C6 46 0B C8 46 8B C4 -- 0942D0
8B 16 7E C5 FF 3E 86 89 05 8B 1A 7E C5 04 F1 E9 -- 0942E0
46 83 00 00 05 C7 C6 7E C5 DA 46 89 E0 D1 04 45 -- 0942F0
89 40 05 8B 16 7E C5 00 01 05 C7 C6 7E 8B 02 C6 -- 094300
7C FF 4A 86 3B A8 46 03 05 8B 16 7E C5 FF 4A 86 -- 094310
FF 50 D6 46 8D 16 D8 46 89 E0 D1 FF 4A 86 8B 7A -- 094320
9A 03 EE 68 06 6A 50 D8 46 8D 16 CA 76 FF CC 76 -- 094330
2D 02 55 8B 05 8B CA 7E C5 10 C4 83 00 64 40 D0 -- 094340
3E 86 8B FF 38 96 89 FF 36 86 89 00 DA 83 00 01 -- 094350
1F 73 FF 36 86 3B 25 7F 08 7C FF 38 96 3B 99 FF -- 094360
05 8B CA 7E C5 00 01 05 C7 C6 7E C5 02 C6 46 83 -- 094370
C5 05 EB FF 3E 86 89 00 DA 83 00 01 2D 02 55 8B -- 094380
76 FF 22 76 FF FF 78 E9 FF 4A 86 FF 05 FF C6 7E -- 094390
FF 04 75 FF 06 75 FF 1A 7E C5 50 A4 46 8D 16 20 -- 0943A0
0A 76 FF 0C 76 FF 02 6A 00 6A 00 6A 35 FF 02 75 -- 0943B0
03 74 00 3D 83 20 7E C5 1A C4 83 00 4C 78 7A 9A -- 0943C0
FF 0A 75 FF 1A 7E C5 00 6A 57 22 76 FF 04 01 E9 -- 0943D0
0E C4 83 00 4C 7D 9F 9A A4 76 FF A6 76 FF 08 75 -- 0943E0
45 8B 0E 7E C5 03 D9 E9 03 74 00 3D 83 20 7E C5 -- 0943F0
B6 FF 01 6A 90 46 01 00 01 25 90 46 89 34 01 FE -- 094400
96 89 FF 56 86 89 04 C4 83 00 64 4E A1 9A FF 5A -- 094410
02 E7 C1 A8 7E 8B FF 54 96 89 FF 52 86 89 FF 58 -- 094420
99 AA 46 8B FF 4E 86 89 F7 F7 D2 2B FF 5A 86 8B -- 094430
5C 86 89 05 8B 16 7E C5 FF 50 86 89 FF 4E BE F7 -- 094440
86 81 0C 74 00 1E 7E 83 FF 5E 86 89 02 45 8B FF -- 094450
04 45 8B 16 7E C5 02 00 FF 5E 86 81 02 00 FF 5C -- 094460
46 89 04 45 8B D8 46 89 E0 D1 05 8B FF 60 86 89 -- 094470
00 FF 4A 86 C7 FF FF FF 3C 86 C7 FF 3A 86 89 DA -- 094480
86 8B 01 91 E9 03 7C FF 50 86 3B FF 4A 86 8B 00 -- 094490
76 FF 22 76 FF FF 62 86 89 48 FF 60 86 03 FF 4E -- 0944A0
FF FF 58 B6 FF 50 FF 5C 86 8D 16 00 6A 00 6A 20 -- 0944B0
C7 14 C4 83 00 54 5C A2 9A 03 6A 13 6A FF 56 B6 -- 0944C0
E9 03 7C FF 4E 86 3B FF 48 86 8B 00 00 FF 48 86 -- 0944D0
01 6A 20 76 FF 22 76 FF 3B 75 00 92 7E 83 01 2E -- 0944E0
16 50 92 46 8D 16 50 98 46 8D 16 50 94 46 8D 16 -- 0944F0
83 00 4C 82 A0 9A A4 76 FF A6 76 FF 50 A0 46 8D -- 094500
4C 86 C7 02 B9 E9 03 74 00 3D 83 20 7E C5 1A C4 -- 094510
DA 46 89 E0 D1 FF 3A 86 FF FF 3A 86 8B 00 00 FF -- 094520
50 D8 46 8D 16 CA 76 FF CC 76 FF 50 D6 46 8D 16 -- 094530
CA 7E C5 10 C4 83 00 64 40 D0 9A 03 EE 68 06 6A -- 094540
72 04 45 3B 16 7C 07 7F 06 55 3B 99 FF 3C 86 8B -- 094550
E9 FF 48 86 FF FF 56 86 01 02 E0 C1 A8 46 8B 11 -- 094560
8B 92 4E FF FF 3C 86 89 04 45 8B CA 7E C5 FF 63 -- 094570
8B 9A 5E 8E 98 7E 03 E7 D1 FF 4C 86 FF FF 4C BE -- 094580
AE 7E 83 9E 56 89 9C 46 89 A2 56 8B A0 46 03 05 -- 094590
52 A8 76 FF 90 76 FF 02 75 FF 0E 7E C5 20 75 00 -- 0945A0
C4 83 00 7C 00 00 9A FF 56 B6 FF FF 58 B6 FF 50 -- 0945B0
FF 02 75 FF 0E 7E C5 C2 76 FF C4 76 FF 29 EB 0E -- 0945C0
FF 58 B6 FF 9C 76 FF 9E 76 FF FF 44 B6 FF 90 76 -- 0945D0
8A 0E 7E C5 12 C4 83 00 84 00 00 9A FF 56 B6 FF -- 0945E0
02 E0 C1 A8 46 8B 9C 46 01 90 66 F7 E4 2A 01 45 -- 0945F0
E9 FF 5E E9 03 74 FF 40 8E FF FF 56 86 01 01 FE -- 094600
96 8B FF 52 86 8B FF 60 86 01 FF 4E 86 8B 01 92 -- 094610
```

653

```
62 E9 FF 4A 86 FF FF 58 96 89 FF 56 86 89 FF 54 -- 094620
01 64 E9 03 7E 06 45 3B FF 60 86 8B 16 7E C5 FE -- 094630
6A 00 6A 20 76 FF 22 76 FF FF 62 86 89 06 45 8B -- 094640
6A FF 56 B6 FF FF 58 B6 FF 50 FF 5C 86 8D 16 00 -- 094650

00 FF 48 86 C7 14 C4 83 00 54 5C A2 9A 03 6A 13 -- 094660
03 7F FF 48 86 3B 40 FF 60 86 2B FF 62 86 8B 00 -- 094670
6A 20 76 FF 22 76 FF 3B 75 00 92 7E 83 01 21 E9 -- 094680
50 92 46 8D 16 50 98 46 8D 16 50 94 46 8D 16 01 -- 094690
00 4C 82 A0 9A A4 76 FF A6 76 FF 50 A0 46 8D 16 -- 0946A0
86 C7 01 1A E9 03 74 00 3D 83 20 7E C5 1A C4 83 -- 0946B0
46 89 E0 D1 FF 3A 86 FF FF 3A 86 8B 00 00 FF 4C -- 0946C0
D8 46 8D 16 CA 76 FF CC 76 FF 50 D6 46 8D 16 DA -- 0946D0
7E C5 10 C4 83 00 64 40 D0 9A 03 EE 68 06 6A 50 -- 0946E0
04 45 3B 16 7C 07 7F 06 55 3B 99 FF 3C 86 8B CA -- 0946F0
FF 48 86 FF FF 56 86 01 02 E0 C1 A8 46 8B 11 72 -- 094700
92 4E FF FF 3C 86 89 04 45 8B CA 7E C5 FF 5E E9 -- 094710
9A 5E 8E 98 7E 03 E7 D1 FF 4C 86 FF FF 4C BE 8B -- 094720
7E 83 9E 56 89 9C 46 89 A2 56 8B A0 46 03 05 8B -- 094730
A8 76 FF 90 76 FF 02 75 FF 0E 7E C5 20 75 00 AE -- 094740
83 00 7C 00 00 9A FF 56 B6 FF FF 58 B6 FF 50 52 -- 094750
02 75 FF 0E 7E C5 C2 76 FF C4 76 FF 29 EB 0E C4 -- 094760
58 B6 FF 9C 76 FF 9E 76 FF FF 44 B6 FF 90 76 FF -- 094770
40 8E FF 12 C4 83 00 84 00 00 9A FF 56 B6 FF FF -- 094780
46 01 90 66 F7 E4 2A 01 45 8A 0E 7E C5 11 74 FF -- 094790
A4 76 FF A6 76 FF 20 76 FF 22 76 FF FF 5E E9 9C -- 0947A0
FF 56 B6 FF FF 58 B6 FF 08 C4 83 00 4C 8B 5B 9A -- 0947B0
E3 9A C2 76 FF C4 76 FF 04 C4 83 00 64 4E E3 9A -- 0947C0
C8 57 56 CB 5E 5F C9 9B C0 2B 04 C4 83 00 64 4E -- 0947D0
76 C4 CC 56 89 CA 46 89 5A 16 CE 46 8D 00 00 54 -- 0947E0
8B C8 46 89 40 04 44 2B 26 06 45 8B 0A 7E C5 0A -- 0947F0
FF FF C4 46 C7 C6 46 89 40 04 2B 26 02 45 01 FE -- 094800
C5 AC 5E DD 9B 02 C4 83 00 5C ED AF 9A C4 76 FF -- 094810
76 DC 9B 02 C4 83 00 5C ED AF 9A 1A 75 FF 12 7E -- 094820
00 5C ED AF 9A 18 75 FF 12 7E C5 B4 5E DD 9B AC -- 094830
AF 9A C4 76 FF C0 5E D9 9B B4 46 DC 9B 02 C4 83 -- 094840
1E 75 FF 12 7E C5 AC 5E DD 9B 02 C4 83 00 5C ED -- 094850
B4 5E DD 9B AC 76 DC 9B 02 C4 83 00 5C ED AF 9A -- 094860
DC 9B 02 C4 83 00 5C ED AF 9A 1C 75 FF 12 7E C5 -- 094870
35 22 26 DC 2E 9B BC 46 D9 9B BC 5E D9 9B B4 46 -- 094880
00 01 B8 05 76 00 5C ED 94 9A 35 2A 1E DC 2E 9B -- 094890
DC 2E 9B BC 46 D9 9B 19 7E 00 00 3D C0 2B 02 EB -- 0948A0
69 77 00 5C ED 94 9A 35 2A 1E DC 2E 9B 35 22 26 -- 0948B0
1E DC 2E 9B 35 22 26 DC 2E 9B BC 46 D9 9B 22 EB -- 0948C0
C0 2B 02 EB 00 01 B8 05 76 00 5C ED 94 9A 35 2A -- 0948D0
9B C0 46 D9 9B B4 5E DD 9B EE D9 9B 45 75 D8 F7 -- 0948E0
0C 76 00 5C ED 94 9A B4 5E DC 9B 35 22 26 DC 2E -- 0948F0
C0 46 D9 9B 0D EB 35 22 26 DC 2E 9B C0 46 D9 9B -- 094900
9A 35 2A 1E DC 2E 9B E0 D9 9B 35 22 26 DC 2E 9B -- 094910
7E C5 00 34 D9 7E 9A 00 BD E9 03 77 00 5C ED 94 -- 094920
D8 46 89 E0 D1 04 45 8B D6 46 89 E0 D1 05 8B 0A -- 094930
50 D6 46 8D 16 CA 76 FF CC 76 FF 50 FE 46 8D 16 -- 094940
CA 7E C5 10 C4 83 00 64 40 D0 9A 03 EE 68 06 6A -- 094950
05 89 0E 7E C5 00 DA 83 00 01 2D 02 55 8B 05 8B -- 094960
89 0E 7E C5 06 55 8B 04 45 8B CA 7E C5 02 55 89 -- 094970
D6 46 89 E0 D1 02 45 8B 0A 7E C5 0A 55 89 08 45 -- 094980
CC 76 FF 50 FE 46 8D 16 D8 46 89 E0 D1 06 45 8B -- 094990
40 D0 9A 03 EE 68 06 6A 50 D6 46 8D 16 CA 76 FF -- 0949A0
00 01 2D 02 55 8B 05 8B CA 7E C5 10 C4 83 00 64 -- 0949B0
8B CA 7E C5 06 55 89 04 45 89 0E 7E C5 00 DA 83 -- 0949C0
```

```
22 9A 0E 55 89 0C 45 89 0E 7E C5 06 55 8B 04 45 -- 0949D0
8B D8 8B 99 14 45 8B 12 7E C5 00 81 E9 00 34 DA -- 0949E0
13 26 08 44 03 26 99 05 8B 0A 7E C5 12 76 C4 CA -- 0949F0

02 55 89 05 89 0E 7E C5 D1 1B C3 2B 0A 54 01 FE -- 094A00
45 8B 0A 7E C5 CA 8B D8 8B 99 16 45 8B 12 7E C5 -- 094A10
7E C5 D1 1B C3 2B 0E 54 13 26 0C 44 03 26 99 04 -- 094A20
03 26 99 C6 46 8B 0E 76 C4 0A 55 89 08 45 89 0E -- 094A30
55 89 04 45 89 00 DA 83 00 01 2D 02 54 13 26 04 -- 094A40
00 01 2D 0A 54 13 26 08 44 03 26 99 C8 46 8B 06 -- 094A50
00 00 CB 5E 5F C9 9B 0E 55 89 0C 45 89 00 DA 83 -- 094A60
57 56 3F 50 62 4D D2 F1 A9 FC 3F F0 00 00 00 00 -- 094A70
3D 80 0E 7E C5 4B 74 00 3D 80 0A 7E C5 EC 8B 55 -- 094A80
98 05 8A 0A 7F 7A 3D 80 0F 7C 61 3D 80 43 74 00 -- 094A90
C5 F0 8B 98 05 8A 0E 7E C5 08 EB 20 EE 83 F0 8B -- 094AA0
2D 98 05 8A 08 7F 7A 3D 80 0D 7C 61 3D 80 0A 7E -- 094AB0
46 FF 08 75 C6 3B 98 05 8A 0A 7E C5 06 EB 00 20 -- 094AC0
7E C5 F0 8B 98 05 8A 0E 7E C5 AD EB 0E 46 FF 0A -- 094AD0
00 00 02 C8 57 56 CB 5E 5F C9 C6 2B 98 05 8A 0A -- 094AE0
7D 05 3B FE 46 8B 3E 3A 3E C5 2E 00 00 FE 46 C7 -- 094AF0
3E 03 2E 03 E7 C1 FE 7E 8B 0A 76 FF 0C 76 FF 31 -- 094B00
5C 35 32 9A 35 FF 02 75 FF 3E 40 1E 8E 2E 3E 3E -- 094B10
FE 46 FF 08 EB FE 46 8B 05 75 C0 0B 08 C4 83 00 -- 094B20
C7 00 00 16 C8 57 56 CB 5E 5F C9 FF FF B8 C3 EB -- 094B30
05 C6 3E 42 3E C5 2E 00 64 0B 9C 9A 00 01 EE 46 -- 094B40
9A 3E 4A 36 FF 2E 3E 4C 36 FF 2E 03 6A 57 56 00 -- 094B50
2E 57 56 05 89 3E 46 3E C5 2E 5E 5F 00 5C C0 7A -- 094B60
3E 4A 36 FF 2E 3E 4C 36 FF 2E 35 FF 3E 52 3E C5 -- 094B70
57 56 05 89 3E 4E 3E C5 2E 5E 5F 00 5C BF 98 9A -- 094B80
BF B8 9A 3E 4A 36 FF 2E 3E 4C 36 FF 2E 00 C8 68 -- 094B90
00 C8 68 57 56 05 89 3E 56 3E C5 2E 5E 5F 00 5C -- 094BA0
5F 00 5C BF B8 9A 3E 4A 36 FF 2E 3E 4C 36 FF 2E -- 094BB0
FF 3E 46 3E C5 2E 57 56 05 89 3E 5A 3E C5 2E 5E -- 094BC0
3E 66 3E C5 2E 3E 62 36 FF 2E 3E 64 36 FF 2E 35 -- 094BD0
5C C0 BA 9A 3E 4A 36 FF 2E 3E 4C 36 FF 2E 35 FF -- 094BE0
FF 2E 01 6A 57 56 05 89 3E 5E 3E C5 2E 5E 5F 00 -- 094BF0
5F 00 5C C0 7A 9A 3E 4A 36 FF 2E 3E 4C 36 01 FE -- 094C00
00 64 5D 04 9A 35 FF 3E 5A 3E C5 2E EA 46 89 5E -- 094C10
35 FF 3E 5A 3E C5 2E FE 56 89 FC 46 89 02 C4 83 -- 094C20
C5 2E FA 56 89 F8 46 89 02 C4 83 00 64 5D 04 9A -- 094C30
F4 46 89 02 C4 83 00 64 5D 04 9A 35 FF 3E 56 3E -- 094C40
83 00 64 5D 04 9A 35 FF 3E 56 3E C5 2E F6 56 89 -- 094C50
76 FF 0A 76 FF 0C 76 FF F2 56 89 F0 46 89 02 C4 -- 094C60
56 3E C5 2E 08 C4 83 00 64 5B B4 9A FC 76 FF FE -- 094C70
56 52 45 89 EA 46 8B 50 45 89 FC 7E C5 05 8B 3E -- 094C80
2E 35 FF 3E 5A 3E C5 2E 35 FF 3E 5E 3E C5 2E 57 -- 094C90
3E 4A 36 FF 2E 3E 4C 36 FF 2E 35 FF 3E 4E 3E C5 -- 094CA0
35 FF 3E 4E 3E C5 2E 57 56 5E 5F 00 5C C0 9A 9A -- 094CB0
6E 36 FF 2E 3E 70 36 FF 2E 35 FF 3E 66 3E C5 2E -- 094CC0
00 5C C0 DA 9A 3E 4A 36 FF 2E 3E 4C 36 FF 2E 3E -- 094CD0
3B 26 3E 56 36 C4 2E 05 89 3E 6A 3E C5 2E 5E 5F -- 094CE0
72 3E C5 2E 04 45 8B F0 7E C5 01 40 E9 03 74 04 -- 094CF0
3E 76 3E C5 2E 02 55 8B 05 8B F0 7E C5 05 89 3E -- 094D00
3E 7A 3E C5 2E 06 45 8B F0 7E C5 02 55 89 05 89 -- 094D10
7E 36 FF 2E 3E 80 36 FF 2E 12 74 EA 46 3B 05 89 -- 094D20
57 56 00 00 EE 46 C7 04 C4 83 00 5C 97 1E 9A 3E -- 094D30
FF 2E 35 FF 3E 66 3E C5 2E 35 FF 3E 4E 3E C5 2E -- 094D40
36 FF 2E 3E 4C 36 FF 2E 3E 6E 36 FF 2E 3E 70 36 -- 094D50
05 89 3E 6A 3E C5 2E 5E 5F 00 5C C0 DA 9A 3E 4A -- 094D60
F6 76 FF 00 B9 E9 03 74 04 3B 26 3E 56 36 C4 2E -- 094D70
```

655

```
CO 0B EC 46 89 04 C4 83 00 64 0D B8 9A F4 76 FF -- 094D80
FF 05 89 3E 72 3E C5 2E 52 45 8B F4 7E C5 3E 7C -- 094D90

2E 03 E3 C1 EC 5E 8B 50 00 50 05 F4 46 8B F6 76 -- 094DA0
04 C4 83 04 5F FF 26 3E 40 06 8E 2E 3E 3E 1E 03 -- 094DB0
05 EB 3E 4A 3E C5 2E 00 00 05 C7 3E 82 3E C5 2E -- 094DC0
3D 80 3E 42 3E C5 2E 00 00 05 C7 3E 72 3E C5 2E -- 094DD0
89 F8 7E C5 50 45 8B F4 7E C5 00 B5 E9 03 74 00 -- 094DE0
C5 2E 05 89 F8 7E C5 05 8B 3E 4A 3E C5 2E 02 45 -- 094DF0
2E 57 56 04 45 89 F8 7E C5 05 8B 3E 72 3E 01 FE -- 094E00
3E C5 2E 35 FF 3E 5A 3E C5 2E 35 FF 3E 6E 3E C5 -- 094E10
9A 9A 3E 4A 36 FF 2E 3E 4C 36 FF 2E 35 FF 3E 4E -- 094E20
FF 3E 4E 3E C5 2E 57 56 FF 03 E9 5E 5F 00 5C CO -- 094E30
00 5C BF 78 9A 3E 4A 36 FF 2E 3E 4C 36 FF 2E 35 -- 094E40
3E 4C 36 FF 2E 35 FF 3E 56 3E C5 2E 57 56 5E 5F -- 094E50
C5 2E 57 56 5E 5F 00 5C BF D8 9A 3E 4A 36 FF 2E -- 094E60
9A 3E 4A 36 FF 2E 3E 4C 36 FF 2E 35 FF 3E 5A 3E -- 094E70
4A 3E C5 2E 0A 75 00 EE 7E 83 5E 5F 00 5C BF D8 -- 094E80
5E 5F C9 CO 2B 02 EB 00 01 B8 05 74 00 3D 83 3E -- 094E90
03 74 00 3D 80 3E 42 3E C5 2E EC 8B 55 57 56 CB -- 094EA0
56 3E C5 2E 35 FF 3E 6E 3E C5 2E 57 56 00 B0 E9 -- 094EB0
2E 3E 4C 36 FF 2E 35 FF 3E 4E 3E C5 2E 35 FF 3E -- 094EC0
3E C5 2E 57 56 5E 5F 00 5C CO 9A 9A 3E 4A 36 FF -- 094ED0
3E 70 36 FF 2E 35 FF 3E 66 3E C5 2E 35 FF 3E 4E -- 094EE0
9A 3E 4A 36 FF 2E 3E 4C 36 FF 2E 3E 6E 36 FF 2E -- 094EF0
2E 57 56 05 89 3E 6A 3E C5 2E 5E 5F 00 5C CO DA -- 094F00
3E 4A 36 FF 2E 3E 4C 36 FF 2E 35 FF 3E 4E 3E C5 -- 094F10
35 FF 3E 56 3E C5 2E 57 56 5E 5F 00 5C BF 78 9A -- 094F20
5F 00 5C BF D8 9A 3E 4A 36 FF 2E 3E 4C 36 FF 2E -- 094F30
2E 3E 4C 36 FF 2E 35 FF 3E 5A 3E C5 2E 57 56 5E -- 094F40
3E 42 3E C5 2E 5E 5F 00 5C BF D8 9A 3E 4A 36 FF -- 094F50
EE 46 C7 00 00 18 C8 57 56 CB 5E 5F C9 01 05 C6 -- 094F60
56 00 05 C6 3E 42 3E C5 2E 00 64 0B 9C 9A 00 01 -- 094F70
CO 7A 9A 3E 4A 36 FF 2E 3E 4C 36 FF 2E 03 6A 57 -- 094F80
3E C5 2E 57 56 05 89 3E 46 3E C5 2E 5E 5F 00 5C -- 094F90
98 9A 3E 4A 36 FF 2E 3E 4C 36 FF 2E 35 FF 3E 52 -- 094FA0
C8 68 57 56 05 89 3E 4E 3E C5 2E 5E 5F 00 5C BF -- 094FB0
00 5C BF B8 9A 3E 4A 36 FF 2E 3E 4C 36 FF 2E 00 -- 094FC0
FF 2E 00 C8 68 57 56 05 89 3E 56 3E C5 2E 5E 5F -- 094FD0
2E 5E 5F 00 5C BF B8 9A 3E 4A 36 FF 2E 3E 4C 36 -- 094FE0
2E 35 FF 3E 46 3E C5 2E 57 56 05 89 3E 5A 3E C5 -- 094FF0
3E 66 3E C5 2E 3E 62 36 FF 2E 3E 64 36 FF 01 FE -- 095000
5C CO BA 9A 3E 4A 36 FF 2E 3E 4C 36 FF 2E 35 FF -- 095010
FF 2E 01 6A 57 56 05 89 3E 5E 3E C5 2E 5E 5F 00 -- 095020
89 5E 5F 00 5C CO 7A 9A 3E 4A 36 FF 2E 3E 4C 36 -- 095030
C4 83 00 64 5D 04 9A 35 FF 3E 5A 3E C5 2E EA 46 -- 095040
04 9A 35 FF 3E 56 3E C5 2E FE 56 89 FC 46 89 02 -- 095050
FF 0C 76 FF F2 56 89 F0 46 89 02 C4 83 00 64 5D -- 095060
08 C4 83 00 64 5B B4 9A FC 76 FF FE 76 FF 0A 76 -- 095070
3E C5 2E 50 45 89 FC 7E C5 05 8B 3E 56 3E C5 2E -- 095080
5E 3E C5 2E 57 56 52 45 89 FC 7E C5 05 8B 3E 7A -- 095090
FF 3E 4E 3E C5 2E 35 FF 3E 5A 3E C5 2E 35 FF 3E -- 0950A0
00 5C CO 9A 9A 3E 4A 36 FF 2E 3E 4C 36 FF 2E 35 -- 0950B0
3E 66 3E C5 2E 35 FF 3E 4E 3E C5 2E 57 56 5E 5F -- 0950C0
4C 36 FF 2E 3E 6E 36 FF 2E 3E 70 36 FF 2E 35 FF -- 0950D0
3E C5 2E 5E 5F 00 5C CO DA 9A 3E 4A 36 FF 2E 3E -- 0950E0
C6 E9 03 74 04 3B 26 3E 56 36 C4 2E 05 89 3E 6A -- 0950F0
7E C5 05 89 3E 72 3E C5 2E 04 45 8B F0 7E C5 01 -- 095100
02 55 89 05 89 3E 76 3E C5 2E 02 55 8B 05 8B F0 -- 095110
12 74 06 44 3B 26 05 8B 3E 7A 3E C5 2E F0 76 C4 -- 095120
```

656

```
83  00  5C  97  1E  9A  3E  86  36  FF  2E  3E  88  36  FF  2E  --  095130
3E  C5  2E  57  56  E8  46  89  0A  45  8B  F0  7E  C5  04  C4  --  095140
D8  9A  3E  4A  36  FF  2E  3E  4C  36  FF  2E  35  FF  3E  5A  --  095150
C5  05  89  3E  5A  3E  C5  2E  E8  46  8B  5E  5F  00  5C  BF  --  095160
FF  3E  56  3E  C5  2E  57  56  E8  46  89  08  45  8B  F0  7E  --  095170
00  5C  BF  D8  9A  3E  4A  36  FF  2E  3E  4C  36  FF  2E  35  --  095180
5A  3E  C5  2E  05  89  3E  56  3E  C5  2E  E8  46  8B  5E  5F  --  095190
56  89  F8  46  89  02  C4  83  00  64  5D  04  9A  35  FF  3E  --  0951A0
02  C4  83  00  64  5D  04  9A  35  FF  3E  56  3E  C5  2E  FA  --  0951B0
3E  C5  2E  57  56  00  00  EE  46  C7  F6  56  89  F4  46  89  --  0951C0
3E  70  36  FF  2E  35  FF  3E  66  3E  C5  2E  35  FF  3E  4E  --  0951D0
9A  3E  4A  36  FF  2E  3E  4C  36  FF  2E  3E  6E  36  FF  2E  --  0951E0
36  C4  2E  05  89  3E  6A  3E  C5  2E  5E  5F  00  5C  C0  DA  --  0951F0
FF  F6  76  FF  00  BD  E9  03  74  04  3B  26  3E  56  01  FE  --  095200
7C  C0  0B  EC  46  89  04  C4  83  00  64  0D  B8  9A  F4  76  --  095210
76  FF  05  89  3E  72  3E  C5  2E  52  45  8B  F4  7E  C5  42  --  095220
03  2E  03  E3  C1  EC  5E  8B  50  00  50  05  F4  46  8B  F6  --  095230
2E  04  C4  83  04  5F  FF  26  3E  40  06  8E  2E  3E  3E  1E  --  095240
00  05  C7  3E  4A  3E  C5  2E  00  00  05  C7  3E  82  3E  C5  --  095250
42  3E  C5  2E  FF  FF  05  C7  3E  4A  3E  C5  2E  09  EB  00  --  095260
C5  50  45  8B  F4  7E  C5  00  81  E9  03  74  00  3D  80  3E  --  095270
89  F8  7E  C5  05  8B  3E  4A  3E  C5  2E  02  45  89  F8  7E  --  095280
57  56  04  45  89  F8  7E  C5  05  8B  3E  72  3E  C5  2E  05  --  095290
C5  2E  35  FF  3E  5A  3E  C5  2E  35  FF  3E  6E  3E  C5  2E  --  0952A0
9A  3E  4A  36  FF  2E  3E  4C  36  FF  2E  35  FF  3E  4E  3E  --  0952B0
3E  4E  3E  C5  2E  57  56  FE  FF  E9  5E  5F  00  5C  C0  9A  --  0952C0
5C  BF  78  9A  3E  4A  36  FF  2E  3E  4C  36  FF  2E  35  FF  --  0952D0
3D  83  3E  4A  3E  C5  2E  0A  75  00  EE  7E  83  5E  5F  00  --  0952E0
57  56  CB  5E  5F  C9  C0  2B  02  EB  00  01  B8  05  74  00  --  0952F0
2E  57  56  7C  75  00  3D  80  3E  42  3E  C5  2E  EC  8B  55  --  095300
3E  C5  2E  35  FF  3E  56  3E  C5  2E  35  FF  3E  6E  3E  C5  --  095310
9A  9A  3E  4A  36  FF  2E  3E  4C  36  FF  2E  35  FF  3E  4E  --  095320
C5  2E  35  FF  3E  4E  3E  C5  2E  57  56  5E  5F  00  5C  C0  --  095330
2E  3E  6E  36  FF  2E  3E  70  36  FF  2E  35  FF  3E  66  3E  --  095340
5E  5F  00  5C  C0  DA  9A  3E  4A  36  FF  2E  3E  4C  36  FF  --  095350
35  FF  3E  4E  3E  C5  2E  57  56  05  89  3E  6A  3E  C5  2E  --  095360
5F  00  5C  BF  78  9A  3E  4A  36  FF  2E  3E  4C  36  FF  2E  --  095370
2C  80  00  CB  5E  5F  C9  01  05  C6  3E  42  3E  C5  2E  5E  --  095380
2B  36  00  6C  2B  30  00  6C  2B  0E  00  3C  1B  18  00  3C  --  095390
2B  2E  00  6C  2B  2C  00  6C  2B  1C  00  6C  2B  26  00  6C  --  0953A0
2B  34  00  6C  2B  1A  00  6C  2B  12  00  6C  2B  2A  00  6C  --  0953B0
2B  24  00  6C  2B  20  00  6C  2B  0A  00  6C  2B  28  00  6C  --  0953C0
57  56  00  6C  2A  D0  00  6C  2B  08  00  6C  2A  9C  00  6C  --  0953D0
46  C7  00  02  FA  46  C7  00  01  F8  46  C7  00  00  12  C8  --  0953E0
F4  46  C7  02  00  F6  46  C7  00  08  FE  46  C7  00  04  FC  --  0953F0
FF  1C  76  FF  00  F1  46  C6  00  F3  46  C6  01  00  01  FE  --  095400
FF  0C  76  FF  47  82  36  FF  2E  47  84  36  FF  2E  1A  76  --  095410
00  3D  83  1A  7E  C5  0C  C4  83  00  54  F6  E3  9A  0A  76  --  095420
2E  00  A0  E9  02  C4  83  00  2C  D0  F8  9A  35  FF  0D  74  --  095430
11  05  05  C7  1A  7E  C5  09  74  00  3D  80  47  86  3E  C5  --  095440
C7  1A  7E  C5  09  75  00  3D  80  47  8A  3E  C5  2E  E0  EB  --  095450
4B  7D  04  EE  7E  83  00  00  EE  46  C7  CD  EB  11  06  05  --  095460
05  8B  47  8E  3E  C5  2E  07  16  F5  03  E6  D1  EE  76  8B  --  095470
C1  EE  46  8B  1A  76  FF  1C  76  FF  30  74  F8  44  23  26  --  095480
0C  76  FF  EE  76  FF  50  52  14  56  8B  12  46  03  09  E0  --  095490
3D  83  1A  7E  C5  0E  C4  83  00  54  FC  8B  9A  0A  76  FF  --  0954A0
18  76  FF  01  6A  AF  EB  EE  46  FF  FF  7C  E9  03  74  00  --  0954B0
C4  83  00  5C  42  50  9A  12  76  FF  14  76  FF  16  76  FF  --  0954C0
C9  C0  2B  05  89  0E  7E  C5  05  8B  47  8E  3E  C5  2E  0A  --  0954D0
```

657

EP 0 533 348 A2

```
46 C7 00 01 F8 46 C7 00 00 12 C8 57 56 CB 5E 5F -- 0954E0
F6 46 C7 00 08 FE 46 C7 00 04 FC 46 C7 00 02 FA -- 0954F0
C7 00 F1 46 C6 00 F3 46 C6 01 00 F4 46 C7 02 00 -- 095500
EE 7E 8B 02 59 E9 03 7C 04 EE 7E 83 00 00 EE 46 -- 095510
3B E9 03 75 0E 46 23 F8 45 8B 1F 16 FD 03 E7 D1 -- 095520
10 46 03 09 E0 C1 EE 46 8B 18 76 FF 1A 76 FF 02 -- 095530
50 9A 0A 76 FF 0C 76 FF EE 76 FF 50 52 12 56 8B -- 095540
35 FF 0D 74 00 3D 83 18 7E C5 0E C4 83 00 54 FD -- 095550
47 92 3E C5 2E 02 36 E9 02 C4 83 00 2C D0 F8 9A -- 095560
2E 9B 05 D9 9B 14 7E C5 01 6D E9 03 74 00 3D 83 -- 095570
C4 83 00 5C ED F9 9A 00 5C ED 99 9A 47 9A 0E DC -- 095580
98 1E 8E 2E 47 96 3E 03 2E FA 8B 0E EE 56 6B 08 -- 095590
47 9A 0E DC 2E 9B 04 45 D9 9B 14 7E C5 05 89 47 -- 0955A0
EE 56 6B 08 C4 83 00 5C ED F9 9A 00 5C ED 99 9A -- 0955B0
02 45 89 47 98 1E 8E 2E 47 96 3E 03 2E FA 8B 0E -- 0955C0
ED 99 9A 47 9A 0E DC 2E 9B 08 45 D9 9B 14 7E C5 -- 0955D0
FA 8B 0E EE 56 6B 08 C4 83 00 5C ED F9 9A 00 5C -- 0955E0
14 7E C5 04 45 89 47 98 1E 8E 2E 47 96 3E 03 2E -- 0955F0
5C ED 99 9A 47 9A 0E DC 2E 9B 0C 45 D9 9B 01 FE -- 095600
2E FA 8B 0E EE 56 6B 08 C4 83 00 5C ED F9 9A 00 -- 095610
9B 14 7E C5 06 45 89 47 98 1E 8E 2E 47 96 3E 03 -- 095620
F9 9A 00 5C ED 99 9A 47 A2 0E DC 2E 9B 10 45 D9 -- 095630
96 3E 03 2E FA 8B 0E EE 56 6B 08 C4 83 00 5C ED -- 095640
14 45 D9 9B 14 7E C5 08 45 89 47 98 1E 8E 2E 47 -- 095650
00 5C ED F9 9A 00 5C ED 99 9A 47 A2 0E DC 2E 9B -- 095660
8E 2E 47 96 3E 03 2E FA 8B 0E EE 56 6B 08 C4 83 -- 095670
DC 2E 9B 18 45 D9 9B 14 7E C5 0A 45 89 47 98 1E -- 095680
08 C4 83 00 5C ED F9 9A 00 5C ED 99 9A 47 A2 0E -- 095690
47 98 1E 8E 2E 47 96 3E 03 2E FA 8B 0E EE 56 6B -- 0956A0
47 AE 0E DC 2E 9B 1C 45 D9 9B 14 7E C5 0C 45 89 -- 0956B0
00 5C ED F9 9A 00 5C ED 99 9A 47 A2 06 DC 2E 9B -- 0956C0
1E 8E 2E 47 AA 3E 03 2E E7 D1 EE 7E 8B 08 C4 83 -- 0956D0
3E 03 2E F8 8B 0E EE 46 6B 00 87 E9 05 89 47 AC -- 0956E0
8B 0E EE 46 6B 00 00 05 C7 47 98 1E 8E 2E 47 96 -- 0956F0
8B 0E EE 46 6B 00 00 02 45 C7 47 96 3E 03 2E F8 -- 095700
8B 0E EE 46 6B 00 00 04 45 C7 47 96 3E 03 2E F8 -- 095710
8B 0E EE 46 6B 00 00 06 45 C7 47 96 3E 03 2E F8 -- 095720
8B 0E EE 46 6B 00 00 08 45 C7 47 96 3E 03 2E F8 -- 095730
8B 0E EE 46 6B 00 00 0A 45 C7 47 96 3E 03 2E F8 -- 095740
E7 D1 EE 7E 8B 00 00 0C 45 C7 47 96 3E 03 2E F8 -- 095750
46 83 00 00 05 C7 47 AC 1E 8E 2E 47 AA 3E 03 2E -- 095760
FF 2E 18 76 FF 1A 76 FF FD 9E E9 EE 46 FF 20 14 -- 095770
DA 9A 0A 76 FF 0C 76 FF 47 82 36 FF 2E 47 84 36 -- 095780
BF E9 03 74 00 3D 83 18 7E C5 0C C4 83 00 54 F5 -- 095790
46 C7 00 04 3C C8 57 56 CB 5E 5F C9 9B C0 2B FD -- 0957A0
8B 2E 00 00 FC 46 C7 30 74 00 12 7E 83 00 00 FA -- 0957B0
FB DE 96 89 FB DC 86 89 47 98 16 8B 2E 47 96 06 -- 0957C0
7E 83 10 75 00 3D 83 02 FB DC 86 83 FB DC BE C5 -- 0957D0
7E 83 00 64 FC 46 C7 E7 EB FC 46 FF 0A 7D 1C FC -- 0957E0
04 FE 7E 83 00 00 FE 46 C7 01 62 E9 03 7C 1C FC -- 0957F0
00 00 05 C7 47 92 3E C5 2E 04 41 E9 03 7C 01 FE -- 095800
8B 0E FE 46 6B FB D4 9E DD 9B 47 B6 06 DF 2E 9B -- 095810
DC 9B 05 DF 9B 47 98 1E 8E 2E 47 96 3E 03 2E F8 -- 095820
DF 2E 9B 1D D9 9B 04 0E 46 83 0E 7E C5 FB D4 B6 -- 095830
03 2E F8 8B 0E FE 46 6B FB D4 9E DD 9B 47 B6 06 -- 095840
D4 B6 DC 9B 02 45 DF 9B 47 98 1E 8E 2E 47 96 3E -- 095850
B6 06 DF 2E 9B 1D D9 9B 04 0E 46 83 0E 7E C5 FB -- 095860
96 3E 03 2E F8 8B 0E FE 46 6B FB D4 9E DD 9B 47 -- 095870
```

658

```
C5 FB D4 B6 DC 9B 04 45 DF 9B 47 98 1E 8E 2E 47 -- 095880
9B 47 B6 06 DF 2E 9B 1D D9 9B 04 0E 46 83 0E 7E -- 095890
2E 47 96 3E 03 2E F8 8B 0E FE 46 6B FB D4 9E DD -- 0958A0
0E 7E C5 FB D4 B6 DC 9B 06 45 DF 9B 47 98 1E 8E -- 0958B0
9E DD 9B 47 B8 06 DF 2E 9B 1D D9 9B 04 0E 46 83 -- 0958C0
1E 8E 2E 47 96 3E 03 2E F8 8B 0E FE 46 6B FB D4 -- 0958D0
46 83 0E 7E C5 FB D4 B6 DC 9B 08 45 DF 9B 47 98 -- 0958E0
FB D4 9E DD 9B 47 B8 06 DF 2E 9B 1D D9 9B 04 0E -- 0958F0
47 98 1E 8E 2E 47 96 3E 03 2E F8 8B 0E FE 46 6B -- 095900
04 0E 46 83 0E 7E C5 FB D4 B6 DC 9B 0A 45 DF 9B -- 095910
46 6B FB D4 9E DD 9B 47 B8 06 DF 2E 9B 1D D9 9B -- 095920
DF 9B 47 98 1E 8E 2E 47 96 3E 03 2E F8 8B 0E FE -- 095930
D9 9B 04 0E 46 83 0E 7E C5 FB D4 B6 DC 9B 0C 45 -- 095940
75 64 FC 7E 83 FE A3 E9 FE 46 FF 04 0E 46 83 1D -- 095950
92 3E C5 2E 09 EB 00 00 05 C7 47 92 3E C5 2E 0B -- 095960
03 7C 04 FE 7E 83 00 00 FE 46 C7 00 01 05 C7 47 -- 095970
C1 FE 46 8B 50 FB E4 86 8D 16 01 00 68 02 C5 E9 -- 095980
28 9A 01 6A 00 6A 50 52 0C 56 8B 0A 46 03 09 E0 -- 095990
89 5A 16 FB E4 86 8D FA 46 89 0E C4 83 00 5C F6 -- 0959A0
D9 9B 05 D9 9B FB E0 BE C5 FB E2 96 89 FB E0 86 -- 0959B0
00 00 FC 46 C7 EA 5E D9 9B 03 FC 85 D9 9B F2 5E -- 0959C0
D9 9B FB E2 9E 8E FB E0 BE 03 02 E7 C1 FC 7E 8B -- 0959D0
EB FC 46 FF 05 75 00 5C ED 94 9A 1D D8 9B F2 46 -- 0959E0
D9 9B 02 C4 83 00 5C ED A7 9A 50 48 FC 46 8B DF -- 0959F0
03 02 E7 C1 FC 7E 8B 00 FF FC 46 C7 F6 5E 01 FE -- 095A00
94 9A 1D D8 9B EA 46 D9 9B FB E2 9E 8E FB E0 BE -- 095A10
9A 50 40 FC 46 8B DF EB FC 4E FF 05 75 00 5C ED -- 095A20
46 83 0E 7E C5 EE 5E D9 9B 02 C4 83 00 5C ED A7 -- 095A30
04 0E 46 83 0E 7E 8B 1D D9 9B F6 46 D9 9B 04 0E -- 095A40
D9 9B 04 0E 46 83 0E 7E 8B 1D D9 9B F2 46 D9 9B -- 095A50
EA 46 D9 9B 04 0E 46 83 0E 7E 8B 1D D9 9B EE 46 -- 095A60
9B E6 5E D9 9B F2 66 D8 9B EA 46 D9 9B 1D D9 9B -- 095A70
D8 9B EE 46 D9 9B FB CC 9E DD 9B 47 BA 06 DF 2E -- 095A80
F6 46 D9 9B FB D4 9E DD 9B FB CC B6 DC 9B F6 66 -- 095A90
83 00 5C ED F9 9A 00 5C ED 99 9A FB D4 86 DC 9B -- 095AA0
FB D4 9E DD 9B 47 BA 06 DF 2E 9B E4 46 89 08 C4 -- 095AB0
E2 86 8E FB E0 B6 03 04 C6 83 02 E6 C1 E4 76 8B -- 095AC0
9B FB E2 9E 8E FB E0 BE 03 02 E7 C1 E4 7E 8B FB -- 095AD0
D4 B6 DC 9B 47 BC 06 DC 2E 9B 04 D8 26 9B 05 D9 -- 095AE0
04 0E 46 83 0E 7E C5 E6 76 D8 9B F2 66 D8 9B FB -- 095AF0
D9 9B FB CC 9E DD 9B 47 C4 06 DF 2E 9B 1D D9 9B -- 095B00
FB D4 9E DD 9B FB CC B6 DC 9B F6 66 D8 9B EE 46 -- 095B10
F9 9A 00 5C ED 99 9A FB D4 86 DC 9B F6 46 D9 9B -- 095B20
9B 47 C6 06 DF 2E 9B E4 46 89 08 C4 83 00 5C ED -- 095B30
8B FB CC 9E DD 9B 47 C4 06 DF 2E 9B FB C4 9E DD -- 095B40
FB E2 9E 8E FB E0 BE 03 04 C7 83 02 E7 C1 E4 7E -- 095B50
E4 7E 8B FB D4 9E DD 9B FB C4 8E DC 9B 05 D9 9B -- 095B60
9B FB D4 86 DC 9B 05 D9 9B FB E0 BE 03 02 E7 C1 -- 095B70
D8 9B F2 66 D8 9B FB CC B6 DC 9B 47 BC 06 DC 2E -- 095B80
06 DF 2E 9B 1D D9 9B 04 0E 46 83 0E 7E C5 E6 76 -- 095B90
9B F6 66 D8 9B EE 46 D9 9B FB C4 9E DD 9B 47 C4 -- 095BA0
9B 47 C6 06 DF 2E 9B FB CC 9E DD 9B FB C4 B6 DC -- 095BB0
86 DC 9B F6 46 D9 9B FB D4 9E DD 9B FB CC 8E DC -- 095BC0
89 08 C4 83 00 5C ED F9 9A 00 5C ED 99 9A FB D4 -- 095BD0
DF 2E 9B FB CC 9E DD 9B 47 C4 06 DF 2E 9B E4 46 -- 095BE0
C6 83 02 E6 C1 E4 76 8B FB D4 9E DD 9B 47 C6 06 -- 095BF0
E7 C1 E4 7E 8B FB E2 86 8E FB E0 B6 03 04 01 FE -- 095C00
D4 8E DC 9B 05 D9 9B FB E2 9E 8E FB E0 BE 03 02 -- 095C10

FB CC B6 DC 9B 47 BC 06 DC 2E 9B 04 D8 26 9B FB -- 095C20
```

659

EP 0 533 348 A2

```
9B  04  0E  46  83  0E  7E  C5  E6  76  D8  9B  F2  66  D8  9B  --  095C30
8B  0E  46  8B  FD  32  E9  FE  46  FF  04  0E  46  83  1D  D9  --  095C40
47  AA  3E  C5  2E  10  56  89  0E  46  89  00  80  2D  10  56  --  095C50
68  7D  04  FE  7E  83  00  00  FE  46  C7  40  7E  00  3D  83  --  095C60
9B  47  AC  1E  8E  2E  47  AA  3E  03  2E  E7  D1  FE  7E  8B  --  095C70
7E  8B  47  AE  36  DC  2E  9B  47  A2  26  DC  2E  9B  05  DF  --  095C80
1D  D9  9B  10  5E  8E  0E  7E  03  1C  C7  83  05  E7  C1  FE  --  095C90
28  7D  04  FE  7E  83  00  00  FE  46  C7  C5  EB  FE  46  FF  --  095CA0
9B  14  64  D8  26  9B  18  45  D9  9B  0E  7E  C5  0E  76  C4  --  095CB0
83  1C  5D  D9  9B  47  BC  0E  DC  2E  9B  47  BC  26  DC  2E  --  095CC0
00  CB  5E  5F  C9  9B  C0  2B  D2  EB  FE  46  FF  20  0E  46  --  095CD0
00  6C  25  DE  00  6C  25  DD  00  6C  25  E3  00  6C  25  DC  --  095CE0
40  59  00  00  00  00  00  00  00  6C  26  36  00  24  77  0E  --  095CF0
00  00  00  00  00  6C  26  6E  40  C3  88  00  00  00  00  00  --  095D00
00  00  00  00  00  00  00  02  27  10  00  64  40  DD  4C  00  --  095D10
68  DF  9A  00  6A  EC  8B  55  57  56  00  03  00  04  3F  E0  --  095D20
01  6A  EC  8B  55  57  56  CB  5E  5F  C9  02  C4  83  0F  A0  --  095D30
8B  55  57  56  CB  5E  5F  C9  02  C4  83  0F  A0  68  DF  9A  --  095D40
56  CB  5E  5F  C9  02  C4  83  0F  A0  68  DF  9A  02  6A  EC  --  095D50
5F  C9  02  C4  83  0F  A0  68  DF  9A  03  6A  EC  8B  55  57  --  095D60
C4  83  0F  A0  68  DF  9A  04  6A  EC  8B  55  57  56  CB  5E  --  095D70
A0  68  DF  9A  05  6A  EC  8B  55  57  56  CB  5E  5F  C9  02  --  095D80
9A  06  6A  EC  8B  55  57  56  CB  5E  5F  C9  02  C4  83  0F  --  095D90
EC  8B  55  57  56  CB  5E  5F  C9  02  C4  83  0F  A0  68  DF  --  095DA0
57  56  CB  5E  5F  C9  02  C4  83  0F  A0  68  DF  9A  07  6A  --  095DB0
5E  5F  C9  02  C4  83  0F  A0  68  DF  9A  08  6A  EC  8B  55  --  095DC0
02  C4  83  0F  A0  68  DF  9A  09  6A  EC  8B  55  57  56  CB  --  095DD0
0F  A0  68  DF  9A  0A  6A  EC  8B  55  57  56  CB  5E  5F  C9  --  095DE0
DF  9A  0B  6A  EC  8B  55  57  56  CB  5E  5F  C9  02  C4  83  --  095DF0
8B  55  57  56  CB  5E  5F  C9  02  C4  83  0F  A0  68  01  FE  --  095E00
56  CB  5E  5F  C9  02  C4  83  0F  A0  68  DF  9A  0C  6A  EC  --  095E10
5F  C9  02  C4  83  0F  A0  68  DF  9A  0D  6A  EC  8B  55  57  --  095E20
C4  83  0F  A0  68  DF  9A  0E  6A  EC  8B  55  57  56  CB  5E  --  095E30
A0  68  DF  9A  0F  6A  EC  8B  55  57  56  CB  5E  5F  C9  02  --  095E40
9A  10  6A  EC  8B  55  57  56  CB  5E  5F  C9  02  C4  83  0F  --  095E50
EC  8B  55  57  56  CB  5E  5F  C9  02  C4  83  0F  A0  68  DF  --  095E60
57  56  CB  5E  5F  C9  02  C4  83  0F  A0  68  DF  9A  11  6A  --  095E70
5E  5F  C9  02  C4  83  0F  A0  68  DF  9A  12  6A  EC  8B  55  --  095E80
02  C4  83  0F  A0  68  DF  9A  13  6A  EC  8B  55  57  56  CB  --  095E90
0F  A0  68  DF  9A  14  6A  EC  8B  55  57  56  CB  5E  5F  C9  --  095EA0
DF  9A  15  6A  EC  8B  55  57  56  CB  5E  5F  C9  02  C4  83  --  095EB0
6A  EC  8B  55  57  56  CB  5E  5F  C9  02  C4  83  0F  A0  68  --  095EC0
55  57  56  CB  5E  5F  C9  02  C4  83  0F  A0  68  DF  9A  16  --  095ED0
CB  5E  5F  C9  02  C4  83  0F  A0  68  DF  9A  17  6A  EC  8B  --  095EE0
C9  02  C4  83  0F  A0  68  DF  9A  18  6A  EC  8B  55  57  56  --  095EF0
83  0F  A0  68  DF  9A  19  6A  EC  8B  55  57  56  CB  5E  5F  --  095F00
68  DF  9A  1A  6A  EC  8B  55  57  56  CB  5E  5F  C9  02  C4  --  095F10
1B  6A  EC  8B  55  57  56  CB  5E  5F  C9  02  C4  83  0F  A0  --  095F20
8B  55  57  56  CB  5E  5F  C9  02  C4  83  0F  A0  68  DF  9A  --  095F30
56  CB  5E  5F  C9  02  C4  83  0F  A0  68  DF  9A  1C  6A  EC  --  095F40
5F  C9  02  C4  83  0F  A0  68  DF  9A  1D  6A  EC  8B  55  57  --  095F50
C4  83  0F  A0  68  DF  9A  1E  6A  EC  8B  55  57  56  CB  5E  --  095F60
A0  68  DF  9A  1F  6A  EC  8B  55  57  56  CB  5E  5F  C9  02  --  095F70
9A  20  6A  EC  8B  55  57  56  CB  5E  5F  C9  02  C4  83  0F  --  095F80
EC  8B  55  57  56  CB  5E  5F  C9  02  C4  83  0F  A0  68  DF  --  095F90
57  56  CB  5E  5F  C9  02  C4  83  0F  A0  68  DF  9A  21  6A  --  095FA0
5E  5F  C9  02  C4  83  0F  A0  68  DF  9A  22  6A  EC  8B  55  --  095FB0

02  C4  83  0F  A0  68  DF  9A  23  6A  EC  8B  55  57  56  CB  --  095FC0
0F  A0  68  DF  9A  24  6A  EC  8B  55  57  56  CB  5E  5F  C9  --  095FD0
```

660

```
DF  9A  25  6A  EC  8B  55  57  56  CB  5E  5F  C9  02  C4  83  --  095FE0
6A  EC  8B  55  57  56  CB  5E  5F  C9  02  C4  83  0F  A0  68  --  095FF0
56  CB  5E  5F  C9  02  C4  83  0F  A0  68  DF  9A  26  01  FE  --  096000
5F  C9  02  C4  83  0F  A0  68  DF  9A  27  6A  EC  8B  55  57  --  096010
C4  83  0F  A0  68  DF  9A  28  6A  EC  8B  55  57  56  CB  5E  --  096020
A0  68  DF  9A  29  6A  EC  8B  55  57  56  CB  5E  5F  C9  02  --  096030
9A  2A  6A  EC  8B  55  57  56  CB  5E  5F  C9  02  C4  83  0F  --  096040
EC  8B  55  57  56  CB  5E  5F  C9  02  C4  83  0F  A0  68  DF  --  096050
57  56  CB  5E  5F  C9  02  C4  83  0F  A0  68  DF  9A  2B  6A  --  096060
5E  5F  C9  02  C4  83  0F  A0  68  DF  9A  2C  6A  EC  8B  55  --  096070
02  C4  83  0F  A0  68  DF  9A  2D  6A  EC  8B  55  57  56  CB  --  096080
0F  A0  68  DF  9A  2E  6A  EC  8B  55  57  56  CB  5E  5F  C9  --  096090
DF  9A  2F  6A  EC  8B  55  57  56  CB  5E  5F  C9  02  C4  83  --  0960A0
6A  EC  8B  55  57  56  CB  5E  5F  C9  02  C4  83  0F  A0  68  --  0960B0
55  57  56  CB  5E  5F  C9  02  C4  83  0F  A0  68  DF  9A  30  --  0960C0
CB  5E  5F  C9  02  C4  83  0F  A0  68  DF  9A  31  6A  EC  8B  --  0960D0
C9  02  C4  83  0F  A0  68  DF  9A  32  6A  EC  8B  55  57  56  --  0960E0
83  0F  A0  68  DF  9A  33  6A  EC  8B  55  57  56  CB  5E  5F  --  0960F0
68  DF  9A  34  6A  EC  8B  55  57  56  CB  5E  5F  C9  02  C4  --  096100
35  6A  EC  8B  55  57  56  CB  5E  5F  C9  02  C4  83  0F  A0  --  096110
8B  55  57  56  CB  5E  5F  C9  02  C4  83  0F  A0  68  DF  9A  --  096120
56  CB  5E  5F  C9  02  C4  83  0F  A0  68  DF  9A  36  6A  EC  --  096130
5F  C9  02  C4  83  0F  A0  68  DF  9A  37  6A  EC  8B  55  57  --  096140
C4  83  0F  A0  68  DF  9A  38  6A  EC  8B  55  57  56  CB  5E  --  096150
A0  68  DF  9A  39  6A  EC  8B  55  57  56  CB  5E  5F  C9  02  --  096160
9A  3A  6A  EC  8B  55  57  56  CB  5E  5F  C9  02  C4  83  0F  --  096170
EC  8B  55  57  56  CB  5E  5F  C9  02  C4  83  0F  A0  68  DF  --  096180
57  56  CB  5E  5F  C9  02  C4  83  0F  A0  68  DF  9A  3B  6A  --  096190
5E  5F  C9  02  C4  83  0F  A0  68  DF  9A  3C  6A  EC  8B  55  --  0961A0
02  C4  83  0F  A0  68  DF  9A  3D  6A  EC  8B  55  57  56  CB  --  0961B0
0F  A0  68  DF  9A  3E  6A  EC  8B  55  57  56  CB  5E  5F  C9  --  0961C0
DF  9A  3F  6A  EC  8B  55  57  56  CB  5E  5F  C9  02  C4  83  --  0961D0
6A  EC  8B  55  57  56  CB  5E  5F  C9  02  C4  83  0F  A0  68  --  0961E0
55  57  56  CB  5E  5F  C9  02  C4  83  0F  A0  68  DF  9A  40  --  0961F0
5F  C9  02  C4  83  0F  A0  68  DF  9A  41  6A  EC  8B  01  FE  --  096200
C4  83  0F  A0  68  DF  9A  42  6A  EC  8B  55  57  56  CB  5E  --  096210
A0  68  DF  9A  43  6A  EC  8B  55  57  56  CB  5E  5F  C9  02  --  096220
9A  44  6A  EC  8B  55  57  56  CB  5E  5F  C9  02  C4  83  0F  --  096230
EC  8B  55  57  56  CB  5E  5F  C9  02  C4  83  0F  A0  68  DF  --  096240
57  56  CB  5E  5F  C9  02  C4  83  0F  A0  68  DF  9A  45  6A  --  096250
5E  5F  C9  02  C4  83  0F  A0  68  DF  9A  46  6A  EC  8B  55  --  096260
02  C4  83  0F  A0  68  DF  9A  47  6A  EC  8B  55  57  56  CB  --  096270
0F  A0  68  DF  9A  48  6A  EC  8B  55  57  56  CB  5E  5F  C9  --  096280
DF  9A  49  6A  EC  8B  55  57  56  CB  5E  5F  C9  02  C4  83  --  096290
6A  EC  8B  55  57  56  CB  5E  5F  C9  02  C4  83  0F  A0  68  --  0962A0
55  57  56  CB  5E  5F  C9  02  C4  83  0F  A0  68  DF  9A  4A  --  0962B0
CB  5E  5F  C9  02  C4  83  0F  A0  68  DF  9A  4B  6A  EC  8B  --  0962C0
C9  02  C4  83  0F  A0  68  DF  9A  4C  6A  EC  8B  55  57  56  --  0962D0
83  0F  A0  68  DF  9A  4D  6A  EC  8B  55  57  56  CB  5E  5F  --  0962E0
68  DF  9A  4E  6A  EC  8B  55  57  56  CB  5E  5F  C9  02  C4  --  0962F0
4F  6A  EC  8B  55  57  56  CB  5E  5F  C9  02  C4  83  0F  A0  --  096300
8B  55  57  56  CB  5E  5F  C9  02  C4  83  0F  A0  68  DF  9A  --  096310
56  CB  5E  5F  C9  02  C4  83  0F  A0  68  DF  9A  50  6A  EC  --  096320
5F  C9  02  C4  83  0F  A0  68  DF  9A  51  6A  EC  8B  55  57  --  096330
C4  83  0F  A0  68  DF  9A  52  6A  EC  8B  55  57  56  CB  5E  --  096340
A0  68  DF  9A  53  6A  EC  8B  55  57  56  CB  5E  5F  C9  02  --  096350

9A  54  6A  EC  8B  55  57  56  CB  5E  5F  C9  02  C4  83  0F  --  096360
EC  8B  55  57  56  CB  5E  5F  C9  02  C4  83  0F  A0  68  DF  --  096370
57  56  CB  5E  5F  C9  02  C4  83  0F  A0  68  DF  9A  55  6A  --  096380
```

661

```
5E  5F  C9  02  C4  83  0F  A0  68  DF  9A  56  6A  EC  8B  55  --  096390
02  C4  83  0F  A0  68  DF  9A  57  6A  EC  8B  55  57  56  CB  --  0963A0
0F  A0  68  DF  9A  58  6A  EC  8B  55  57  56  CB  5E  5F  C9  --  0963B0
DF  9A  59  6A  EC  8B  55  57  56  CB  5E  5F  C9  02  C4  83  --  0963C0
6A  EC  8B  55  57  56  CB  5E  5F  C9  02  C4  83  0F  A0  68  --  0963D0
55  57  56  CB  5E  5F  C9  02  C4  83  0F  A0  68  DF  9A  5A  --  0963E0
CB  5E  5F  C9  02  C4  83  0F  A0  68  DF  9A  5B  6A  EC  8B  --  0963F0
C4  83  0F  A0  68  DF  9A  5C  6A  EC  8B  55  57  56  01  FE  --  096400
A0  68  DF  9A  5D  6A  EC  8B  55  57  56  CB  5E  5F  C9  02  --  096410
9A  5E  6A  EC  8B  55  57  56  CB  5E  5F  C9  02  C4  83  0F  --  096420
EC  8B  55  57  56  CB  5E  5F  C9  02  C4  83  0F  A0  68  DF  --  096430
57  56  CB  5E  5F  C9  02  C4  83  0F  A0  68  DF  9A  5F  6A  --  096440
5E  5F  C9  02  C4  83  0F  A0  68  DF  9A  60  6A  EC  8B  55  --  096450
02  C4  83  0F  A0  68  DF  9A  61  6A  EC  8B  55  57  56  CB  --  096460
0F  A0  68  DF  9A  62  6A  EC  8B  55  57  56  CB  5E  5F  C9  --  096470
DF  9A  63  6A  EC  8B  55  57  56  CB  5E  5F  C9  02  C4  83  --  096480
6A  EC  8B  55  57  56  CB  5E  5F  C9  02  C4  83  0F  A0  68  --  096490
55  57  56  CB  5E  5F  C9  02  C4  83  0F  A0  68  DF  9A  64  --  0964A0
CB  5E  5F  C9  02  C4  83  0F  A0  68  DF  9A  65  6A  EC  8B  --  0964B0
C9  02  C4  83  0F  A0  68  DF  9A  66  6A  EC  8B  55  57  56  --  0964C0
83  0F  A0  68  DF  9A  67  6A  EC  8B  55  57  56  CB  5E  5F  --  0964D0
68  DF  9A  68  6A  EC  8B  55  57  56  CB  5E  5F  C9  02  C4  --  0964E0
69  6A  EC  8B  55  57  56  CB  5E  5F  C9  02  C4  83  0F  A0  --  0964F0
8B  55  57  56  CB  5E  5F  C9  02  C4  83  0F  A0  68  DF  9A  --  096500
56  CB  5E  5F  C9  02  C4  83  0F  A0  68  DF  9A  6A  6A  EC  --  096510
5F  C9  02  C4  83  0F  A0  68  DF  9A  6B  6A  EC  8B  55  57  --  096520
C4  83  0F  A0  68  DF  9A  6C  6A  EC  8B  55  57  56  CB  5E  --  096530
A0  68  DF  9A  6D  6A  EC  8B  55  57  56  CB  5E  5F  C9  02  --  096540
9A  6E  6A  EC  8B  55  57  56  CB  5E  5F  C9  02  C4  83  0F  --  096550
EC  8B  55  57  56  CB  5E  5F  C9  02  C4  83  0F  A0  68  DF  --  096560
57  56  CB  5E  5F  C9  02  C4  83  0F  A0  68  DF  9A  6F  6A  --  096570
5E  5F  C9  02  C4  83  0F  A0  68  DF  9A  70  6A  EC  8B  55  --  096580
02  C4  83  0F  A0  68  DF  9A  71  6A  EC  8B  55  57  56  CB  --  096590
0F  A0  68  DF  9A  72  6A  EC  8B  55  57  56  CB  5E  5F  C9  --  0965A0
DF  9A  73  6A  EC  8B  55  57  56  CB  5E  5F  C9  02  C4  83  --  0965B0
2E  EC  8B  55  57  56  CB  5E  5F  C9  02  C4  83  0F  A0  68  --  0965C0
00  3D  83  58  98  3E  C5  2E  00  01  05  C7  58  94  3E  C5  --  0965D0
C5  2E  01  6A  58  A0  36  FF  2E  58  A2  36  FF  2E  25  74  --  0965E0
83  00  64  3D  BA  9A  01  40  68  02  6A  35  FF  58  9C  3E  --  0965F0
FF  6A  00  2C  AC  1C  9A  00  5C  B0  57  9A  0C  C4  01  FE  --  096600
83  00  5C  52  A3  9A  58  A4  36  FF  2E  58  A6  36  FF  2E  --  096610
00  2C  D0  CB  9A  00  01  05  C7  58  A8  3E  C5  2E  06  C4  --  096620
C5  2E  00  01  05  C7  58  AC  3E  C5  2E  00  54  33  E2  9A  --  096630
6A  04  75  00  03  3D  05  8B  07  74  00  3D  83  58  B0  3E  --  096640
3E  C5  2E  02  C4  83  00  4C  C3  DC  9A  07  6A  02  EB  08  --  096650
C9  00  00  05  C7  58  98  3E  C5  2E  00  00  05  C7  58  B4  --  096660
C5  2E  00  00  FC  46  C7  00  00  08  C8  57  56  CB  5E  5F  --  096670
6A  00  02  05  C7  0A  7E  C5  1C  75  00  3D  83  58  B8  3E  --  096680
83  00  64  28  52  9A  12  8A  68  00  6A  00  6A  00  6A  00  --  096690
58  94  3E  C5  2E  00  01  05  C7  0A  7E  C5  07  EB  0A  C4  --  0966A0
02  45  8B  58  A4  3E  C5  2E  00  B3  E9  03  74  00  3D  83  --  0966B0
C4  83  00  64  4E  E3  9A  35  FF  02  75  FF  1B  74  05  0B  --  0966C0
68  00  00  02  45  C7  00  00  05  C7  58  A4  3E  C5  2E  04  --  0966D0
89  58  BC  3E  C5  2E  02  C4  83  00  64  4E  56  9A  08  00  --  0966E0
81  00  00  FE  46  C7  FA  56  89  F8  46  89  02  55  89  05  --  0966F0

46  FF  05  89  F8  7E  C5  FE  46  8B  11  7D  01  00  FE  7E  --  096700
75  FF  58  BC  3E  C5  2E  57  56  E8  EB  02  F8  46  83  FE  --  096710
9A  02  00  68  35  FF  02  75  FF  50  02  00  05  05  8B  02  --  096720
02  75  FF  58  BC  3E  C5  2E  57  56  5E  5F  00  5C  FE  EC  --  096730
```

662

```
EC 9A 04 00 68 35 FF 02 75 FF 50 04 00 05 05 8B -- 096740
A4 36 FF 2E 58 A6 36 FF 2E FF 6A 5E 5F 00 5C FE -- 096750
00 01 FC 46 C7 05 EB 06 C4 83 00 5C 52 A3 9A 58 -- 096760
2E 35 FF 02 75 FF 58 C8 3E C5 2E 00 4C C7 B7 9A -- 096770
58 C0 36 FF 2E 58 C2 36 FF 2E 35 FF 58 C4 3E C5 -- 096780
C5 2E 1F 74 00 FC 7E 83 0A C4 83 00 44 87 60 9A -- 096790
6A 04 75 00 03 3D 05 8B 07 74 00 3D 83 58 B0 3E -- 0967A0
3E C5 2E 02 C4 83 00 4C C3 DC 9A 07 6A 02 EB 08 -- 0967B0
01 3D 05 8B 58 D0 3E C5 2E 20 75 00 3D 83 58 CC -- 0967C0
CF 28 9A 02 C4 83 00 4C 61 B4 9A 00 6A 14 75 00 -- 0967D0
D0 3E C5 2E 00 5C 57 BA 9A 00 44 D0 09 9A 00 44 -- 0967E0
5F C9 00 01 05 C7 58 D4 3E C5 2E 00 00 05 C7 58 -- 0967F0
C8 57 56 CB 5E 5F C9 EC 8B 55 57 56 CB 5E 01 FE -- 096800
56 89 F8 46 89 02 55 8B 05 8B 0A 7E C5 00 00 24 -- 096810
89 0A 7E C5 02 C4 83 00 64 4E 56 9A 04 00 68 FA -- 096820
FF 52 57 56 15 74 F8 46 0B FA 46 8B 02 55 89 05 -- 096830
5F 00 5C FE EC 9A 04 00 68 F8 76 FF FA 76 FF 35 -- 096840
0E 46 8B 0A 7E C5 00 F3 E9 03 75 FF 0E 7E 83 5E -- 096850
C5 2E FE 56 89 FC 46 89 02 55 8B 05 03 08 E0 C1 -- 096860
46 89 02 55 8B 05 03 09 E0 C1 0E 46 8B 58 BC 3E -- 096870
8E 2E 58 D8 3E 03 2E E7 D1 0E 7E 8B EE 56 89 EC -- 096880
F6 46 C7 25 75 00 64 3D F4 46 89 05 8B 58 DA 1E -- 096890
8B EC 7E C5 01 A2 E9 03 7C 01 00 F6 7E 81 00 00 -- 0968A0
02 EC 46 83 FC 46 FF F6 46 FF 05 88 FC 7E C5 05 -- 0968B0
F6 7E 81 00 00 F6 46 C7 1F 75 00 F4 7E 83 E0 EB -- 0968C0
FF 05 88 FC 7E C5 F6 46 8B 01 77 E9 03 7C 01 00 -- 0968D0
DC 36 DC 2E 9B F4 46 DF 9B E6 EB FC 46 FF F6 46 -- 0968E0
7C 01 00 F6 7E 81 00 00 F6 46 C7 F0 5E D9 9B 58 -- 0968F0
ED AF 9A 50 F6 46 2B 05 8B EC 7E C5 01 4A E9 03 -- 096900
4E DC 9B F0 46 D9 9B DC 5E DD 9B 02 C4 83 00 5C -- 096910
ED 99 9A E4 46 DC 9B F6 46 DF 9B E4 5E DD 9B DC -- 096920
88 FC 7E C5 E4 2A 08 C4 83 00 5C EE 14 9A 00 5C -- 096930
0E 46 C7 AD EB 02 EC 46 83 FC 46 FF F6 46 FF 05 -- 096940
46 8B 0A 7E C5 00 F3 E9 03 7C 04 0E 7E 83 00 00 -- 096950
2E FE 56 89 FC 46 89 02 55 8B 05 03 08 E0 C1 0E -- 096960
89 02 55 8B 05 03 09 E0 C1 0E 46 8B 58 BC 3E C5 -- 096970
2E 58 D8 3E 03 2E E7 D1 0E 7E 8B EE 56 89 EC 46 -- 096980
46 C7 25 75 00 64 3D F4 46 89 05 8B 58 DA 1E 8E -- 096990
EC 7E C5 00 9B E9 03 7C 01 00 F6 7E 81 00 00 F6 -- 0969A0
EC 46 83 FC 46 FF F6 46 FF 05 88 FC 7E C5 05 8B -- 0969B0
7E 81 00 00 F6 46 C7 1C 75 00 F4 7E 83 E0 EB 02 -- 0969C0
F6 46 FF 05 88 FC 7E C5 F6 46 8B 73 7D 01 00 F6 -- 0969D0
9B 58 DC 36 DC 2E 9B F4 46 DF 9B E9 EB FC 46 FF -- 0969E0
C5 49 7D 01 00 F6 7E 81 00 00 F6 46 C7 F0 5E D9 -- 0969F0
83 00 5C ED AF 9A 50 F6 46 2B 05 8B EC 7E 01 FE -- 096A00
DD 9B DC 4E DC 9B F0 46 D9 9B DC 5E DD 9B 02 C4 -- 096A10
9A 00 5C ED 99 9A E4 46 DC 9B F6 46 DF 9B E4 5E -- 096A20
46 FF 05 88 FC 7E C5 E4 2A 08 C4 83 00 5C EE 14 -- 096A30
FF 04 E9 0E 46 FF B0 EB 02 EC 46 83 FC 46 FF F6 -- 096A40
C7 58 B4 3E C5 2E EC 8B 55 57 56 CB 5E 5F C9 9B -- 096A50
3E C5 2E 58 A0 36 FF 2E 58 A2 36 FF 2E 00 01 05 -- 096A60
01 2D 68 02 6A 35 FF 58 9C 3E C5 2E 35 FF 58 E4 -- 096A70
00 3D 83 58 A0 3E C5 2E 0C C4 83 00 64 3D BA 9A -- 096A80
64 28 52 9A 35 FF 00 6A 00 6A 00 6A 00 6A 14 74 -- 096A90

2E 00 00 05 C7 58 AC 3E C5 2E 1C EB 0A C4 83 00 -- 096AA0
05 C7 58 98 3E C5 2E 09 75 00 3D 83 58 B8 3E C5 -- 096AB0
58 98 3E C5 2E EC 8B 55 57 56 CB 5E 5F C9 00 01 -- 096AC0
6A 58 A0 36 FF 2E 58 A2 36 FF 2E 25 74 00 3D 83 -- 096AD0
3D BA 9A 01 40 68 02 6A 35 FF 58 9C 3E C5 2E 01 -- 096AE0
```

663

```
2E  00  2C  AC  A1  9A  00  5C  B2  27  9A  0C  C4  83  00  64  --  096AF0
01  05  C7  58  AC  3E  C5  2E  00  01  05  C7  58  A8  3E  C5  --  096B00
52  A3  9A  58  A4  36  FF  2E  58  A6  36  FF  2E  FF  6A  00  --  096B10
4C  C3  DC  9A  35  FF  58  E8  3E  C5  2E  06  C4  83  00  5C  --  096B20
3E  C5  2E  05  89  58  B4  3E  C5  2E  C0  2B  02  C4  83  00  --  096B30
8D  16  00  00  2C  C8  57  56  CB  5E  5F  C9  05  89  58  98  --  096B40
2E  99  D8  46  8B  04  C4  83  00  5C  E0  79  9A  50  D8  46  --  096B50
58  EC  3E  F7  2E  99  DA  46  8B  D6  46  89  58  EC  3E  F7  --  096B60
76  FF  50  58  EE  36  FF  2E  58  F0  36  FF  2E  D4  46  89  --  096B70
3E  C5  2E  75  74  C0  0B  08  C4  83  00  54  32  B4  9A  D6  --  096B80
46  8B  58  F6  3E  C5  2E  0C  75  05  3B  D8  46  8B  58  F2  --  096B90
6A  58  A0  36  FF  2E  58  A2  36  FF  2E  5D  74  05  3B  DA  --  096BA0
3D  BA  9A  01  40  68  02  6A  35  FF  58  9C  3E  C5  2E  02  --  096BB0
F4  36  FF  2E  50  D8  46  8D  16  28  6A  0C  C4  83  00  64  --  096BC0
FF  2E  0A  C4  83  00  5C  ED  6E  9A  58  F2  36  FF  2E  58  --  096BD0
C5  2E  D8  76  FF  DA  76  FF  58  A0  36  FF  2E  58  A2  36  --  096BE0
83  00  64  3D  BA  9A  01  3F  68  03  6A  35  FF  58  9C  3E  --  096BF0
3E  C5  2E  EC  8B  55  57  56  CB  5E  5F  C9  0E  C4  01  FE  --  096C00
08  6A  04  75  00  03  3D  05  8B  07  74  00  3D  83  58  B0  --  096C10
98  3E  C5  2E  02  C4  83  00  4C  C3  DC  9A  07  6A  02  EB  --  096C20
83  58  F2  3E  C5  2E  00  5C  B1  2A  9A  00  01  05  C7  58  --  096C30
FF  2E  27  74  00  3D  83  58  F6  3E  C5  2E  31  74  00  3D  --  096C40
FF  58  F2  3E  C5  2E  35  FF  58  A0  36  FF  2E  58  A2  36  --  096C50
3D  BA  9A  01  3F  68  03  6A  35  FF  58  9C  3E  C5  2E  35  --  096C60
57  9A  EC  8B  55  57  56  CB  5E  5F  C9  0E  C4  83  00  64  --  096C70
2E  01  6A  58  A0  36  FF  2E  58  A2  36  FF  2E  00  5C  B0  --  096C80
00  64  3D  BA  9A  01  40  68  02  6A  35  FF  58  9C  3E  C5  --  096C90
CB  5E  5F  C9  00  00  05  C7  58  98  3E  C5  2E  0C  C4  83  --  096CA0
6A  58  A0  36  FF  2E  58  A2  36  FF  2E  EC  8B  55  57  56  --  096CB0
3D  BA  9A  01  40  68  02  6A  35  FF  58  9C  3E  C5  2E  00  --  096CC0
A4  36  FF  2E  58  A6  36  FF  2E  FF  6A  0C  C4  83  00  64  --  096CD0
35  FF  58  E8  3E  C5  2E  06  C4  83  00  5C  52  A3  9A  58  --  096CE0
36  FF  2E  58  A2  36  FF  2E  02  C4  83  00  4C  C3  DC  9A  --  096CF0
35  FF  58  F2  3E  C5  2E  35  FF  58  F6  3E  C5  2E  58  A0  --  096D00
64  3D  BA  9A  01  3F  68  03  6A  35  FF  58  9C  3E  C5  2E  --  096D10
3E  C5  2E  EC  8B  55  57  56  CB  5E  5F  C9  0E  C4  83  00  --  096D20
C9  00  00  05  C7  58  F6  3E  C5  2E  00  00  05  C7  58  F2  --  096D30
36  FF  2E  58  A2  36  FF  2E  EC  8B  55  57  56  CB  5E  5F  --  096D40
01  40  68  02  6A  35  FF  58  9C  3E  C5  2E  00  6A  58  A0  --  096D50
02  C8  57  56  CB  5E  5F  C9  0C  C4  83  00  64  3D  BA  9A  --  096D60
74  00  07  3D  FE  46  89  05  8B  58  E8  3E  C5  2E  00  00  --  096D70
74  00  3D  83  58  B4  3E  C5  2E  76  75  08  FE  7E  83  06  --  096D80
58  A2  36  FF  2E  2A  74  00  3D  83  58  98  3E  C5  2E  6C  --  096D90
02  6A  35  FF  58  9C  3E  C5  2E  01  6A  58  A0  36  FF  2E  --  096DA0
00  5C  57  BA  9A  0C  C4  83  00  64  3D  BA  9A  01  40  68  --  096DB0
C7  58  A8  3E  C5  2E  00  2C  AC  A1  9A  00  5C  B2  27  9A  --  096DC0
98  3E  C5  2E  05  89  58  B4  3E  C5  2E  C0  2B  00  01  05  --  096DD0
58  A6  36  FF  2E  FF  6A  14  74  00  0A  7E  83  05  89  58  --  096DE0
5E  5F  C9  06  C4  83  00  5C  52  A3  9A  58  A4  36  FF  2E  --  096DF0
00  3C  F5  A4  00  6C  30  E2  00  6C  30  E4  00  CB  01  FE  --  096E00
00  6C  16  60  00  3C  86  9A  00  6C  30  DE  00  6C  31  16  --  096E10
00  6C  30  E8  00  6C  16  4A  00  6C  30  E6  00  6C  17  64  --  096E20
00  3C  A6  C0  00  6C  17  C6  00  3C  A6  DC  00  6C  17  3A  --  096E30

00  00  00  00  00  6C  17  6E  00  3C  A6  B4  00  3C  A6  E6  --  096E40
AE  C6  00  02  00  6C  17  62  00  6C  30  EC  40  59  00  00  --  096E50
00  00  0A  C8  57  56  00  6C  30  F0  00  6C  30  EE  00  3C  --  096E60
24  C7  6B  F8  8B  E4  2A  FF  46  8A  FF  46  88  12  46  8B  --  096E70
FA  46  88  E4  2A  04  45  8A  10  5E  8E  0E  7E  03  F8  8B  --  096E80
8A  0E  7E  03  F8  8B  24  C7  6B  F8  8B  E4  2A  FF  46  8A  --  096E90
```

```
C7 6B F8 8B E4 2A FF 46 8A FB 46 88 E4 2A 06 45 -- 096EA0
46 8A FC 46 88 E4 2A 08 45 8A 0E 7E 03 F8 8B 24 -- 096EB0
0A 45 8A 0E 7E 03 F8 8B 24 C7 6B F8 8B E4 2A FF -- 096EC0
50 FA 46 8D 16 14 76 FF 16 76 FF FD 46 88 E4 2A -- 096ED0
10 56 8B 0E 46 03 24 C7 6B F8 8B E4 2A FF 46 8A -- 096EE0
01 97 68 06 6A 50 00 01 05 C3 8B 51 CA 8B D8 8B -- 096EF0
12 74 00 3D 83 14 7E C5 10 C4 83 00 64 40 D0 9A -- 096F00
83 00 64 28 52 9A 35 FF 00 6A 00 6A 00 6A 00 6A -- 096F10
F0 8B E4 2A 00 A6 85 8A 0A 7E C5 0A 5E C4 0A C4 -- 096F20
8A 00 A9 9F 8E 26 00 A7 BF 03 26 F8 8B 26 C6 6B -- 096F30
6B F8 8B E4 2A FF 46 8A 24 6A 05 88 E4 2A FF 46 -- 096F40
A7 85 8B 0A 7E C5 50 52 10 56 8B 0E 46 03 24 C7 -- 096F50
84 8A 0A 76 8B F8 56 89 F6 46 89 00 A9 95 8B 00 -- 096F60
F6 46 03 26 C7 6B F8 8B 00 A6 84 FE E4 2A 00 A6 -- 096F70
6E 9A 50 00 01 05 C3 8B 51 CA 8B D8 8B F8 56 8B -- 096F80
00 00 04 C8 57 56 CB 5E 5F C9 0A C4 83 00 5C ED -- 096F90
05 3B E4 2A FD 46 8A 61 34 3E C5 2E 01 FD 46 C6 -- 096FA0
7E 03 F8 8B 24 C7 6B F8 8B E4 2A FD 46 8A 52 77 -- 096FB0
8A 12 76 FF 14 76 FF 36 74 00 3D 80 10 5E 8E 0E -- 096FC0
8E 2E 61 38 3E 03 2E FF C7 83 F8 8B E4 2A FD 46 -- 096FD0
76 FF 10 76 FF 50 FE 46 89 E4 2A 05 8A 61 3A 1E -- 096FE0
FE 0E C4 83 00 5C 58 FA 9A 0A 76 FF 0C 76 FF 0E -- 096FF0
8A 61 3C 3E C5 2E 01 FD 46 C6 A0 EB FD 46 01 FE -- 097000
6B F8 8B E4 2A FD 46 8A 52 77 05 3B E4 2A FD 46 -- 097010
FF 36 74 00 3D 80 10 5E 8E 0E 7E 03 F8 8B 24 C7 -- 097020
2E FF C7 83 F8 8B E4 2A FD 46 8A 12 76 FF 14 76 -- 097030
FE 46 89 E4 2A 05 8A 61 42 1E 8E 2E 61 40 3E 03 -- 097040
58 FA 9A 0A 76 FF 0C 76 FF 0E 76 FF 10 76 FF 50 -- 097050
7E C5 7D FD 46 C6 A0 EB FD 46 FE 0E C4 83 00 5C -- 097060
B5 FF 24 6A 3B 77 00 AC 85 3B E4 2A FD 46 8A 0A -- 097070
FD 46 8A 0A 76 8B 50 12 69 05 00 A7 85 8B 00 A9 -- 097080
8B 00 A9 94 8B 00 A7 84 03 26 C7 6B F8 8B E4 2A -- 097090
83 00 5C ED 6E 9A 50 00 01 05 C3 8B 51 CA 8B D8 -- 0970A0
00 0E C8 57 56 CB 5E 5F C9 B7 EB FD 46 FE 0A C4 -- 0970B0
46 C7 00 00 F6 46 C7 01 FD 46 C6 00 FF 46 C6 00 -- 0970C0
04 C4 83 00 64 4E A1 9A 01 00 68 24 6A 00 FF F4 -- 0970D0
03 05 C7 14 7E C5 0A 75 C2 0B FA 56 89 F8 46 89 -- 0970E0
F8 76 FF FA 76 FF F6 76 FF F4 76 FF 01 2B E9 D3 -- 0970F0
64 43 5D 9A 0A 76 FF 0C 76 FF 50 E4 2A FD 46 8A -- 097100
00 F1 E9 03 74 C0 0B 05 89 14 7E C5 0E C4 83 00 -- 097110
7E C5 04 C4 83 00 64 43 A9 9A 0A 76 FF 0C 76 FF -- 097120
4C 74 00 12 7E 83 00 00 A6 85 C6 00 AC 85 89 0E -- 097130
FF 46 8A 00 C4 E9 03 76 7F FF 7E 80 7E FF 46 C6 -- 097140
80 FA 5E 8E F8 7E 03 F8 8B 24 C7 6B F8 8B E4 2A -- 097150
89 E4 2A FF 46 8A 14 76 FF 16 76 FF 23 74 00 3D -- 097160
9A 0E 76 FF 10 76 FF F8 76 FF FA 76 FF 50 F2 46 -- 097170
44 3E C5 2E B8 EB FF 46 FE 0E C4 83 00 5C 58 FA -- 097180
3D 05 8B 61 48 3E C5 2E 28 75 00 0A 3D 05 8B 61 -- 097190
F8 76 FF FA 76 FF 14 76 FF 16 76 FF 1C 75 00 01 -- 0971A0
51 EB 0C C4 83 00 5C 5A 2A 9A 0E 76 FF 10 76 FF -- 0971B0
00 AC 85 3B E4 2A FF 46 8A 0E 7E C5 01 FF 46 C6 -- 0971C0
7E 03 F8 8B 24 C7 6B F8 8B E4 2A FF 46 8A 3F 77 -- 0971D0

8A 14 76 FF 16 76 FF 23 74 00 3D 80 FA 5E 8E F8 -- 0971E0
76 FF F8 76 FF FA 76 FF 50 F2 46 89 E4 2A FF 46 -- 0971F0
46 FE 0E C4 83 00 5C 58 FA 9A 0E 76 FF 10 01 FE -- 097200
C4 83 00 64 4E E3 9A F8 76 FF FA 76 FF B3 EB FF -- 097210
7E C5 0E 76 C4 00 00 08 C8 57 56 CB 5E 5F C9 04 -- 097220
DB 9B F8 5E DD 9B 20 74 DC 26 9B 10 45 DD 9B 0E -- 097230
7E C5 00 B2 9D D9 9B 0A 7E C5 F8 76 DC 9B 08 45 -- 097240
```

665

```
DB 9B F8 5E DD 9B 28 74 DC 26 9B 18 45 DD 9B 0E -- 097250
7E C5 00 B6 9D D9 9B 0A 7E C5 F8 76 DC 9B 0C 45 -- 097260
8A 0E 7E C5 2E 45 88 0A 7E C5 E4 2A 07 45 8A 0E -- 097270
8B 08 45 8B 0E 7E C5 2F 45 88 0A 7E C5 E4 2A 05 -- 097280
45 8B 0E 7E C5 32 55 89 30 45 89 0A 7E C5 0A 55 -- 097290
0E 7E C5 36 55 89 34 45 89 0A 7E C5 0E 55 8B 0C -- 0972A0
45 8A 0E 7E C5 50 45 88 0A 7E C5 E4 2A 06 45 8A -- 0972B0
C5 02 45 8B 0E 7E C5 51 45 88 0A 7E C5 E4 2A 01 -- 0972C0
9B EE D9 9B 54 5D D9 9B EE D9 9B 52 45 89 0A 7E -- 0972D0
B2 85 D9 9B 5C 5D D9 9B 00 B6 85 D9 9B 58 5D D9 -- 0972E0
74 DC 26 9B 18 45 DD 9B 0E 7E C5 60 5D D9 9B 00 -- 0972F0
9B 10 45 DD 9B 0E 7E C5 64 5D D9 9B 0A 7E C5 28 -- 097300
D9 9B EE D9 9B 68 5D D9 9B 0A 7E C5 20 74 DC 26 -- 097310
5D D9 9B 5C 45 D9 9B 70 5D D9 9B EE D9 9B 6C 5D -- 097320
7C 5D D9 9B EE D9 9B 78 5D D9 9B 60 45 D9 9B 74 -- 097330
C5 00 80 9D DD 9B 0A 7E C5 10 45 DD 9B 0E 7E C5 -- 097340
7E C5 00 88 9D DD 9B 0A 7E C5 18 45 DD 9B 0E 7E -- 097350
0E 7E C5 00 90 9D DD 9B 0A 7E C5 20 45 DD 9B 0E -- 097360
4C 3E C5 2E 00 98 9D DD 9B 0A 7E C5 28 45 DD 9B -- 097370
9B 00 00 28 45 C7 00 AE 85 88 0A 7E C5 05 8B 61 -- 097380
C7 00 00 FC 46 C7 00 00 14 C8 57 56 CB 5E 5F C9 -- 097390
46 C7 00 00 F2 46 C7 00 00 F4 46 C7 00 00 FE 46 -- 0973A0
68 04 6A 00 FF EC 46 C7 00 02 EE 46 C7 00 00 F0 -- 0973B0
A2 85 89 0E 7E C5 04 C4 83 00 64 4E A1 9A 01 00 -- 0973C0
6A 02 66 E9 D3 03 68 06 75 C2 0B 00 A4 95 89 00 -- 0973D0
89 0E 7E C5 04 C4 83 00 64 4E A1 9A 01 00 68 26 -- 0973E0
FF 00 A4 B5 FF 12 75 C2 0B 00 A9 95 89 00 A7 85 -- 0973F0
6A CC EB 04 C4 83 00 64 4E E3 9A 00 A2 B5 01 FE -- 097400
56 89 FC 46 89 04 C4 83 00 64 4E A1 9A 01 6A 30 -- 097410
76 FF 57 56 1A EB D3 03 F4 46 C7 07 75 C2 0B FE -- 097420
9A 50 F4 46 8D 16 FC 76 FF FE 76 FF 0A 76 FF 0C -- 097430
FF 01 D9 E9 03 74 00 F4 7E 83 5E 5F 00 64 39 0E -- 097440
00 5C 5C B1 9A 0E 76 FF 10 76 FF FC 76 FF FE 76 -- 097450
76 FF 10 76 FF 12 76 FF 50 F4 46 8D 16 08 C4 83 -- 097460
83 0E C4 83 00 5C 5B 49 9A 0A 76 FF 0C 76 FF 0E -- 097470
46 8D 16 00 5C 69 BC 9A 01 A0 E9 03 74 00 F4 7E -- 097480
A0 05 0E 46 8B 10 76 FF EE 76 FF F0 76 FF 50 F4 -- 097490
76 FF 00 6A 50 00 A6 05 0E 46 8B 10 76 FF 50 00 -- 0974A0
00 A0 85 8B 0E 7E C5 14 C4 83 00 5C 6B E6 9A F2 -- 0974B0
FA 7E 8B 0E 76 C4 2C 7D 00 FF FA 7E 81 FA 46 89 -- 0974C0
FA 46 8B 00 A4 9C 8E 26 00 A2 BC 03 26 02 E7 C1 -- 0974D0
89 00 A2 BC 03 26 02 E7 C1 FA 7E 8B 02 45 89 40 -- 0974E0
00 0A 3D 05 8B 61 44 3E C5 2E CD EB FA 46 FF 05 -- 0974F0
74 00 01 3D 05 8B 61 48 3E C5 2E 01 1A E9 03 74 -- 097500
26 7D 00 FF FA 7E 81 00 7D FA 46 C7 01 0B E9 03 -- 097510
7E 8B 0E 76 C4 01 F2 85 8B 00 A2 BD C5 0E 7E C5 -- 097520
45 89 00 A4 9C 8E 26 00 A2 BC 03 26 02 E7 C1 FA -- 097530
61 34 3E C5 2E 00 01 FA 46 C7 D3 EB FA 46 FF 02 -- 097540
FA 7E 8B 15 7F 7D FA 7E 83 1B 7F 05 3B FA 46 8B -- 097550
FA 46 FF 05 88 61 3A 1E 8E 2E 61 38 3E 03 2E 4F -- 097560
01 F8 46 C7 F6 46 89 05 8B 61 34 3E C5 2E D9 EB -- 097570

3B F8 46 8B 61 3C 3E C5 2E 27 7D 7D F6 7E 83 00 -- 097580
42 1E 8E 2E 61 40 3E 03 2E 4F F8 7E 8B 1B 7F 05 -- 097590
4E FF D3 EB F8 46 FF 05 88 F6 46 8B F6 46 FF 61 -- 0975A0
46 8B F8 4E FF 05 89 61 34 3E C5 2E FA 46 8B FA -- 0975B0
FA 7E 81 00 00 FA 46 C7 05 89 61 3C 3E C5 2E F8 -- 0975C0
8E 2E 61 50 3E 03 2E E7 D1 FA 7E 8B 18 7F 00 FF -- 0975D0
00 FA 46 C7 E1 EB FA 46 FF 00 01 05 C7 61 52 1E -- 0975E0
3E C5 2E 22 7D 05 3B FA 46 8B 61 34 3E C5 2E 00 -- 0975F0
```

```
03 2E E7 D1 F8 8B E4 2A 05 8A F8 03 61 38 01 FE -- 097600
EB FA 46 FF 00 02 05 C7 61 52 1E 8E 2E 61 50 3E -- 097610
FC 46 0B FE 46 8B 00 FF 00 A0 85 C7 0E 7E C5 D2 -- 097620
04 C4 83 00 64 4E E3 9A FC 76 FF FE 76 FF 0E 74 -- 097630
C4 83 00 64 59 DC 9A F4 76 FF 0B 74 00 F4 7E 83 -- 097640
FE 46 89 C0 2B 00 00 02 C8 57 56 CB 5E 5F C9 02 -- 097650
76 FF 0C 76 FF 61 54 36 FF 2E 61 56 36 FF 2E 50 -- 097660
55 57 56 CB 5E 5F C9 0A C4 83 00 5C 5E 20 9A 0A -- 097670
4E E3 9A 02 75 FF 04 75 FF 61 58 3E C5 2E EC 8B -- 097680
01 75 FF 03 75 FF 61 5C 3E C5 2E 04 C4 83 00 64 -- 097690
00 3C B3 16 CB 5E 5F C9 04 C4 83 00 64 4E E3 9A -- 0976A0
00 3C 86 9A 00 3C B3 2A 00 3C B3 14 00 3C B4 2A -- 0976B0
00 6C 28 74 00 3C AF 10 00 3C B3 22 00 6C 20 8A -- 0976C0
86 C7 00 00 FC C8 57 56 00 6C 29 1A 00 6C 29 14 -- 0976D0
00 04 FF 16 86 C7 00 02 FF 14 86 C7 00 01 FF 12 -- 0976E0
FF 0E 86 C7 02 00 FF 10 86 C7 00 08 FF 18 86 C7 -- 0976F0
76 FF 00 02 FF 04 86 C7 00 01 FF 06 86 C7 01 00 -- 097700
0A 76 FF 0C 76 FF 50 FF 1A 86 8D 16 10 76 FF 12 -- 097710
15 74 00 3D 83 10 7E C5 0C C4 83 00 54 F6 E3 9A -- 097720
83 00 64 28 52 9A 35 FF 00 6A 00 6A 00 6A 00 6A -- 097730
C7 10 7E C5 09 74 00 FF 21 BE 80 01 CE E9 0A C4 -- 097740
C7 10 7E C5 09 75 00 FF 1B BE 80 DB EB 11 05 05 -- 097750
69 80 3E C5 2E E4 2A FF 1B 86 8A CB EB 11 06 05 -- 097760
86 89 02 C4 83 00 64 4E 56 9A FF 10 B6 FF 05 89 -- 097770
09 75 FF 0A 86 0B FF 0C 86 8B FF 0C 96 89 FF 0A -- 097780
05 C7 69 84 3E C5 2E 97 EB 11 07 05 C7 10 7E C5 -- 097790
52 E9 03 7E 00 03 3D 05 8B 69 84 3E C5 2E 00 00 -- 0977A0
03 E7 D1 3D 8B 01 3E E9 03 75 00 FF 1C BE 83 01 -- 0977B0
12 76 FF 01 2C E9 03 75 00 FF 12 BD 83 1F 16 FD -- 0977C0
69 84 3E C5 2E FF 0A B6 FF FF 0C B6 FF 10 76 FF -- 0977D0
0E C4 83 00 54 FC 8B 9A 0A 76 FF 0C 76 FF 35 FF -- 0977E0
FF 0A B6 FF FF 0C B6 FF 1E 74 00 3D 83 10 7E C5 -- 0977F0
00 6A 00 6A 00 6A 04 C4 83 00 64 4E E3 9A 01 FE -- 097800
B6 FF 60 75 03 0E 7E 83 FF 22 E9 10 7E C5 00 6A -- 097810
E0 C1 05 8B 69 84 3E C5 2E 69 88 36 C4 2E FF 0E -- 097820
B6 FF FF 0C B6 FF 50 52 02 54 8B 26 04 03 26 09 -- 097830
83 00 5C F6 28 9A FF 06 B6 FF FF 04 B6 FF FF 0A -- 097840
90 3E C5 2E 10 76 FF 12 76 FF FF 08 86 89 0E C4 -- 097850
69 84 3E C5 2E 69 88 36 C4 2E 35 FF 02 75 FF 69 -- 097860
B6 FF 5A EB 02 54 8B 26 04 03 26 09 E0 C1 05 8B -- 097870
94 06 03 2E 09 E0 C1 05 8B 69 84 3E C5 2E FF 0E -- 097880
FF 0A B6 FF FF 0C B6 FF 50 52 69 96 16 8B 2E 69 -- 097890
0E C4 83 00 5C F6 28 9A FF 06 B6 FF FF 04 B6 FF -- 0978A0
FF 69 90 3E C5 2E 10 76 FF 12 76 FF FF 08 86 89 -- 0978B0
03 2E 09 E0 C1 05 8B 69 84 3E C5 2E 35 FF 02 75 -- 0978C0
2E 0E 76 FF 35 FF 50 52 69 96 16 8B 2E 69 94 06 -- 0978D0
00 64 40 D0 9A 01 45 68 09 6A 35 FF 69 8C 3E C5 -- 0978E0
69 84 3E C5 2E 1A 75 00 3D 83 10 7E C5 16 C4 83 -- 0978F0
4E E3 9A FF 0A B6 FF FF 0C B6 FF FE 9F E9 05 FF -- 097900
00 6A EC 8B 55 57 56 CB 5E 5F C9 04 C4 83 00 64 -- 097910

8B 55 57 56 CB 5E 5F C9 02 C4 83 00 5C 63 EB 9A -- 097920
56 CB 5E 5F C9 02 C4 83 00 5C 63 EB 9A 01 6A EC -- 097930
5F C9 02 C4 83 00 5C 63 EB 9A 02 6A EC 8B 55 57 -- 097940
C4 83 00 5C 63 EB 9A 03 6A EC 8B 55 57 56 CB 5E -- 097950
2E E7 D1 0A 7E 8B EC 8B 55 57 56 CB 5E 5F C9 02 -- 097960
69 98 3E C5 2E 05 8B 69 9E 1E 8E 2E 69 9C 3E 03 -- 097970
76 FF 00 6A 69 94 36 FF 2E 69 96 36 FF 2E 05 89 -- 097980
3D 83 69 A0 3E C5 2E 08 C4 83 00 5C 64 7C 9A 0A -- 097990
FF 03 6A 35 FF 02 75 FF 69 88 3E C5 2E 17 74 00 -- 0979A0
```

```
2E 69 A6 36 FF 2E 08 C4 83 00 5C 64 7C 9A 0A 76 -- 0979B0
C4 83 00 5C 64 7C 9A 0A 76 FF 02 6A 69 A4 36 FF -- 0979C0
69 A6 36 FF 2E 17 74 00 3D 83 69 A8 3E C5 2E 08 -- 0979D0
83 00 5C 64 7C 9A 0A 76 FF 01 6A 69 A4 36 FF 2E -- 0979E0
03 0A 7E 83 00 00 04 C8 57 56 CB 5E 5F C9 08 C4 -- 0979F0
03 FE 7E 83 00 00 FE 46 C7 00 85 E9 03 7C 01 FE -- 097A00
2E 50 FC 46 8D 16 1F 75 0A 46 3B FE 46 8B 5F 7D -- 097A10
03 09 E0 C1 FE 46 8B 35 FF 02 75 FF 69 90 3E C5 -- 097A20
C5 2E 50 FC 46 8D 16 19 EB 50 52 10 56 8B 0E 46 -- 097A30
36 FF 2E 69 AE 36 FF 2E 35 FF 02 75 FF 69 90 3E -- 097A40
6A 35 FF 69 8C 3E C5 2E 0C 76 FF FE 76 FF 69 AC -- 097A50
EB FE 46 FF 16 C4 83 00 64 40 D0 9A 01 45 68 09 -- 097A60
35 FF 02 75 FF 69 90 3E C5 2E 50 FC 46 8D 16 9B -- 097A70
00 FE 46 C7 5C EB 69 B0 36 FF 2E 69 B2 36 FF 2E -- 097A80
90 3E C5 2E 50 FC 46 8D 16 38 7D 03 FE 7E 83 00 -- 097A90
69 B0 36 FF 2E 69 B2 36 FF 2E 35 FF 02 75 FF 69 -- 097AA0
68 09 6A 35 FF 69 8C 3E C5 2E 0C 76 FF FE 76 FF -- 097AB0
16 C2 EB FE 46 FF 16 C4 83 00 64 40 D0 9A 01 45 -- 097AC0
76 FF 35 FF 02 75 FF 69 90 3E C5 2E 50 FC 46 8D -- 097AD0
3E C5 2E 0C 76 FF 03 6A 50 06 00 05 0E 46 8B 10 -- 097AE0
C4 83 00 64 40 D0 9A 01 45 68 09 6A 35 FF 69 8C -- 097AF0
C7 69 B4 3E C5 2E EC 8B 55 57 56 CB 5E 5F C9 16 -- 097B00
68 69 B0 36 FF 2E 69 B2 36 FF 2E 57 56 00 02 05 -- 097B10
CB 5E 5F C9 5E 5F 00 8C 00 02 9A 02 00 68 00 FF -- 097B20
56 00 01 05 C7 69 B4 3E C5 2E 00 00 04 C8 57 56 -- 097B30
02 00 68 00 6A 69 AC 36 FF 2E 69 AE 36 FF 2E 57 -- 097B40
89 00 01 B8 50 FE 46 8D 16 5E 5F 00 8C 00 02 9A -- 097B50
0A C4 83 00 64 40 D0 9A 01 48 68 03 6A 50 FC 46 -- 097B60
00 5C 66 90 9A 00 6A EC 8B 55 57 56 CB 5E 5F C9 -- 097B70
90 9A 01 6A EC 8B 55 57 56 CB 5E 5F C9 02 C4 83 -- 097B80
6A EC 8B 55 57 56 CB 5E 5F C9 02 C4 83 00 5C 66 -- 097B90
55 57 56 CB 5E 5F C9 02 C4 83 00 5C 66 90 9A 02 -- 097BA0
CB 5E 5F C9 02 C4 83 00 5C 66 90 9A 03 6A EC 8B -- 097BB0
C9 02 C4 83 00 5C 67 7C 9A 00 6A EC 8B 55 57 56 -- 097BC0
83 00 5C 67 7C 9A 01 6A EC 8B 55 57 56 CB 5E 5F -- 097BD0
67 7C 9A 02 6A EC 8B 55 57 56 CB 5E 5F C9 02 C4 -- 097BE0
03 6A EC 8B 55 57 56 CB 5E 5F C9 02 C4 83 00 5C -- 097BF0
57 56 CB 5E 5F C9 02 C4 83 00 5C 67 7C 9A 01 FE -- 097C00
1E 8E 2E 69 9C 3E 03 2E E7 D1 0A 7E 8B EC 8B 55 -- 097C10
69 B4 3E C5 2E 05 09 69 98 3E C5 2E 05 8B 69 9E -- 097C20
00 6A 69 94 36 FF 2E 69 96 36 FF 2E 00 02 05 C7 -- 097C30
69 A0 3E C5 2E 08 C4 83 00 5C 67 2A 9A 0A 76 FF -- 097C40
6A 35 FF 02 75 FF 69 88 3E C5 2E 17 74 00 3D 83 -- 097C50
A6 36 FF 2E 08 C4 83 00 5C 67 2A 9A 0A 76 FF 03 -- 097C60
00 5C 67 2A 9A 0A 76 FF 02 6A 69 A4 36 FF 2E 69 -- 097C70
36 FF 2E 17 74 00 3D 83 69 A8 3E C5 2E 08 C4 83 -- 097C80
5C 67 2A 9A 0A 76 FF 01 6A 69 A4 36 FF 2E 69 A6 -- 097C90
8D 16 00 00 02 C8 57 56 CB 5E 5F C9 08 C4 83 00 -- 097CA0
0A 46 8B 35 FF 02 75 FF 69 90 3E C5 2E 50 FE 46 -- 097CB0

76 FF 0A 76 FF 50 52 10 56 8B 0E 46 03 09 E0 C1 -- 097CC0
40 D0 9A 01 45 68 09 6A 35 FF 69 8C 3E C5 2E 0C -- 097CD0
DC 9A FE 76 FF 0B 74 00 FE 7E 83 16 C4 83 00 64 -- 097CE0
8B EC 8B 55 57 56 CB 5E 5F C9 02 C4 83 00 64 59 -- 097CF0
05 8B 69 BA 1E 8E 2E 69 B8 3E 03 2E E7 D1 0A 7E -- 097D00
5C 67 E5 9A 0A 76 FF 00 6A 05 21 69 98 3E C5 2E -- 097D10
03 6A 0D 74 00 3D 83 69 A0 3E C5 2E 04 C4 83 00 -- 097D20
0A 76 FF 02 6A 04 C4 83 00 5C 67 E5 9A 0A 76 FF -- 097D30
00 3D 83 69 A8 3E C5 2E 04 C4 83 00 5C 67 E5 9A -- 097D40
C9 04 C4 83 00 5C 67 E5 9A 0A 76 FF 01 6A 0D 74 -- 097D50
```

668

EP 0 533 348 A2

```
C5 2E 50 FE 46 8D 16 00 00 02 C8 57 56 CB 5E 5F -- 097D60
36 FF 2E 69 B2 36 FF 2E 35 FF 02 75 FF 69 90 3E -- 097D70
6A 35 FF 69 8C 3E C5 2E 0C 76 FF 0A 76 FF 69 B0 -- 097D80
00 FE 7E 83 16 C4 83 00 64 40 D0 9A 01 45 68 09 -- 097D90
5E 5F C9 02 C4 83 00 64 59 DC 9A FE 76 FF 0B 74 -- 097DA0
00 0F 05 C7 69 98 3E C5 2E 00 00 04 C8 57 56 CB -- 097DB0
C0 2B 50 FE 46 8D 16 00 00 05 C7 69 B4 3E C5 2E -- 097DC0
C4 83 00 64 40 D0 9A 01 48 68 03 6A 50 FC 46 89 -- 097DD0
68 CB 9A 00 6A 69 94 36 FF 2E 69 96 36 FF 2E 0A -- 097DE0
2E 14 74 00 3D 83 69 A0 3E C5 2E 06 C4 83 00 5C -- 097DF0
68 CB 9A 03 6A 35 FF 02 75 FF 69 88 3E C5 01 FE -- 097E00
6A 69 A4 36 FF 2E 69 A6 36 FF 2E 06 C4 83 00 5C -- 097E10
3D 83 69 A8 3E C5 2E 06 C4 83 00 5C 68 CB 9A 02 -- 097E20
9A 01 6A 69 A4 36 FF 2E 69 A6 36 FF 2E 14 74 00 -- 097E30
00 04 C8 57 56 CB 5E 5F C9 06 C4 83 00 5C 68 CB -- 097E40
FC 46 8D 16 4F 7D 04 FE 7E 83 00 00 FE 46 C7 00 -- 097E50
E0 C1 FE 46 8B 35 FF 02 75 FF 69 90 3E C5 2E 50 -- 097E60
2E 0A 76 FF FE 76 FF 50 52 0E 56 8B 0C 46 03 09 -- 097E70
00 64 40 D0 9A 01 45 68 09 6A 35 FF 69 8C 3E C5 -- 097E80
64 59 DC 9A FC 76 FF 0D 74 00 FC 7E 83 16 C4 83 -- 097E90
56 CB 5E 5F C9 AB EB FE 46 FF 05 EB 02 C4 83 00 -- 097EA0
38 7D 04 FC 7E 83 00 00 FC 46 C7 00 00 04 C8 57 -- 097EB0
D1 FE 76 8B 27 74 01 00 FE 7E 81 00 00 FE 46 C7 -- 097EC0
96 1E 8E 2E 69 94 3E 03 2E 09 E7 C1 FC 7E 8B E6 -- 097ED0
46 FF 0D EB C0 2B 04 74 FE 46 3B 05 8B FE 03 69 -- 097EE0
00 CB 5E 5F C9 00 01 B8 C2 EB FC 46 FF D2 EB FE -- 097EF0
00 3C 6E 70 00 3C 96 5A 00 3C 76 86 00 3C 76 88 -- 097F00
00 3C 6E 74 00 3C 6E 84 00 3C 6E 86 00 3C 76 8A -- 097F10
00 3C 76 8E 00 3C 90 C2 00 24 4D 5C 00 3C AE 54 -- 097F20
02 C8 57 56 00 3C 6E 7C 00 3C 6E 6E 00 3C 78 8E -- 097F30
3E C5 2E 12 7D 10 FE 7E 83 00 00 FE 46 C7 00 00 -- 097F40
2E E8 EB FE 46 FF 05 88 FE 46 8B FE 7E 03 71 FC -- 097F50
02 C8 57 56 CB 5E 5F C9 00 00 05 C7 72 00 3E C5 -- 097F60
FC 36 FF 2E 71 FE 36 FF 2E 50 FE 46 8D 16 00 00 -- 097F70
0A 6A 00 6A 00 6A 01 6A 10 6A 50 0A 46 8D 16 71 -- 097F80
56 CB 5E 5F C9 18 C4 83 00 64 40 D0 9A 01 43 68 -- 097F90
0B 02 C4 83 00 4C E8 17 9A 05 6A 00 00 04 C8 57 -- 097FA0
FC 46 89 02 C4 83 00 4C E7 73 9A 43 6A 3D 74 C0 -- 097FB0
89 FC 7E C5 05 8B 05 FF 72 00 3E C5 2E FE 56 89 -- 097FC0
68 03 6A 00 6A 00 6A 00 6A 29 7E 00 FA 3D 06 45 -- 097FD0
32 EB D0 8B C0 2B 0A C4 83 00 64 28 52 9A 00 C9 -- 097FE0
FE 56 89 FC 46 89 02 C4 83 00 4C E4 4D 9A 05 6A -- 097FF0
45 C7 00 00 05 C7 00 00 11 45 C7 FC 7E C5 01 FE -- 098000
46 8B 02 C4 83 00 5C 69 EC 9A 06 75 FF 00 00 02 -- 098010
04 6A 00 00 04 C8 57 56 CB 5E 5F C9 FE 56 8B FC -- 098020
46 8B FE 56 89 FC 46 89 02 C4 83 00 4C E8 4E 9A -- 098030
8B FC 7E C5 3C EB D0 8B C0 2B 06 75 FC 46 0B FE -- 098040
22 74 FC 46 0B FE 46 8B 2A 74 08 45 3B 48 0A 46 -- 098050

57 FE 76 FF 16 74 08 45 3B 48 0A 46 8B FC 7E C5 -- 098060
FE 56 89 FC 46 89 06 C4 83 00 4C E0 49 9A 04 6A -- 098070
04 C8 57 56 CB 5E 5F C9 FE 56 8B FC 46 8B D6 EB -- 098080
89 FC 46 89 02 C4 83 00 4C E8 4E 9A 04 6A 00 00 -- 098090
0C 45 8B FC 7E C5 19 74 FC 46 0B FE 46 8B FE 56 -- 0980A0
C4 83 00 4C E0 49 9A 04 6A 57 52 0E 74 0A 46 3B -- 0980B0
55 57 56 CB 5E 5F C9 FE 56 8B FC 46 8B D9 EB 06 -- 0980C0
83 00 4C E5 59 9A 04 6A 0A 76 FF 0C 76 FF EC 8B -- 0980D0
13 45 89 15 45 89 11 45 89 0A 7E C5 C0 2B 06 C4 -- 0980E0
5F C9 06 C4 83 00 4C E3 1B 9A 05 6A 57 0C 76 FF -- 0980F0
07 74 10 46 0B 12 46 8B 00 00 12 C8 57 56 CB 5E -- 098100
```

669

```
00  4C  DF  13  9A  04  6A  01  6A  00  00  05  C7  10  7E  C5  --  098110
74  FC  46  0B  FE  46  8B  FE  56  89  FC  46  89  04  C4  83  --  098120
89  06  C4  83  00  4C  DF  DD  9A  04  6A  FC  76  FF  52  33  --  098130
0C  75  0A  46  3B  0C  45  8B  FC  7E  C5  FA  56  89  F8  46  --  098140
8B  F8  46  8B  04  C4  83  00  5C  6B  4B  9A  57  FE  76  FF  --  098150
46  C7  00  00  20  C8  57  56  CB  5E  5F  C9  BF  EB  FA  56  --  098160
EE  46  C7  00  00  EC  46  C7  00  00  F2  46  C7  00  00  F0  --  098170
9A  0A  76  FF  00  00  EA  46  C7  00  00  E8  46  C7  00  00  --  098180
EE  46  8B  EE  56  89  EC  46  89  02  C4  83  00  5C  6A  A6  --  098190
E9  D0  8B  C0  2B  07  74  00  0A  7E  83  0D  75  EC  46  0B  --  0981A0
E0  C1  01  6A  F4  46  89  E4  2A  05  8A  0E  7E  C5  02  64  --  0981B0
F8  56  89  F6  46  89  04  C4  83  00  64  4E  A1  9A  50  02  --  0981C0
C7  FD  56  89  FB  46  89  F6  46  8B  FA  46  88  F4  46  8B  --  0981D0
D5  E9  03  77  F4  46  3B  E4  2A  FA  46  8A  00  00  F4  46  --  0981E0
0B  F2  46  8B  F2  56  89  F0  46  89  00  5C  6A  1F  9A  01  --  0981F0
89  F0  46  8B  09  75  00  F4  7E  83  A7  74  F0  46  01  FE  --  098200
46  8B  0C  45  89  F0  7E  C5  0C  46  8B  EA  56  89  E8  46  --  098210
7C  03  26  F8  8B  26  F4  46  6B  0E  76  C4  08  45  89  0A  --  098220
6A  04  45  89  F0  7E  C5  E4  2A  05  8A  03  5C  8E  26  01  --  098230
D8  8B  03  55  8B  01  45  03  26  F4  46  6B  0E  7E  C5  24  --  098240
05  F0  46  8B  F2  76  FF  50  00  01  05  C3  8B  51  CA  8B  --  098250
45  8B  0E  7E  C5  0A  C4  83  00  5C  ED  6E  9A  50  00  17  --  098260
F0  8B  26  F4  46  6B  E6  56  89  E4  46  89  03  55  8B  01  --  098270
01  45  8B  1F  74  02  01  7C  80  26  E6  46  8E  E4  76  03  --  098280
03  F0  8B  26  F4  46  6B  E2  56  89  E0  46  89  03  55  8B  --  098290
02  16  7E  83  0B  75  04  01  7C  80  26  E2  46  8E  E0  76  --  0982A0
0F  45  89  F0  7E  C5  16  46  8B  03  EB  00  0C  B8  05  75  --  0982B0
01  7C  03  26  F8  8B  26  F4  46  6B  0E  76  C4  0A  45  89  --  0982C0
03  02  E7  C1  F4  7E  8B  E4  2A  02  45  8A  03  5C  8E  26  --  0982D0
03  26  F8  8B  26  F4  46  6B  01  45  88  F8  5E  8E  F6  7E  --  0982E0
E7  C1  F4  7E  8B  E4  2A  03  45  8A  03  5C  8E  26  01  7C  --  0982F0
F8  8B  26  F4  46  6B  02  45  88  F8  5E  8E  F6  7E  03  02  --  098300
F4  7E  8B  E4  2A  04  45  8A  03  5C  8E  26  01  7C  03  26  --  098310
05  16  7E  83  03  45  88  F8  5E  8E  F6  7E  03  02  E7  C1  --  098320
45  89  0A  46  8B  11  45  89  F0  7E  C5  18  46  8B  12  75  --  098330
F0  7E  C5  18  46  8B  09  75  04  16  7E  83  15  45  89  13  --  098340
6A  EC  76  FF  EE  76  FF  F0  76  FF  F2  76  FF  11  45  89  --  098350
C4  06  45  8B  F0  7E  C5  0A  C4  83  00  4C  EA  08  9A  04  --  098360
03  5C  8E  26  01  7C  03  26  FA  8B  26  F4  56  6B  0E  76  --  098370
F8  5E  8E  F6  7E  03  02  E7  C1  F4  7E  8B  E4  2A  05  88  --  098380
E7  C1  F4  7E  8B  12  76  C4  04  45  8B  F0  7E  C5  05  88  --  098390
45  8B  F0  7E  C5  05  89  04  5C  8E  26  02  7C  03  26  02  --  0983A0
89  04  5C  8E  26  02  7C  03  26  02  E7  C1  F4  7E  8B  06  --  0983B0
76  FF  10  75  01  FA  7E  80  FE  1E  E9  F4  46  FF  02  45  --  0983C0
76  FF  0D  EB  00  6A  FB  76  FF  FD  76  FF  1A  76  FF  1C  --  0983D0
68  06  6A  00  6A  01  6A  50  FA  46  8D  16  1A  76  FF  1C  --  0983E0
C5  E4  2A  FA  46  8A  10  C4  83  00  64  40  D0  9A  01  32  --  0983F0

64  4E  E3  9A  F6  76  FF  F8  76  FF  05  89  12  7E  01  FE  --  098400
57  56  CB  5E  5F  C9  EA  56  8B  E8  46  8B  04  C4  83  00  --  098410
8B  0C  7E  C5  3E  74  0C  46  0B  0E  46  8B  00  00  04  C8  --  098420
7E  C5  14  74  C2  0B  FE  56  89  FC  46  89  02  55  8B  05  --  098430
89  08  45  8B  0C  7E  C5  09  7D  0A  46  3B  13  45  8B  FC  --  098440
83  00  4C  DF  DD  9A  04  6A  0C  76  FF  0E  76  FF  0A  46  --  098450
5E  5F  C9  0A  46  8B  BA  EB  0E  56  89  0C  46  89  06  C4  --  098460
FC  46  89  12  56  8B  10  46  8B  00  00  0C  C8  57  56  CB  --  098470
7E  C5  00  A0  E9  03  75  FC  46  0B  FE  46  8B  FE  56  89  --  098480
03  06  7D  8B  00  92  E9  03  74  0A  46  3B  0C  45  8B  FC  --  098490
02  45  8B  0C  7E  C5  35  75  00  3D  80  16  5E  8E  14  7E  --  0984A0
C4  06  45  8B  FC  7E  C5  F6  56  89  F4  46  89  04  55  8B  --  0984B0
```

670

```
05 88 F6 5E 8E F4 7E 03 04 FF 26 3C 8B 26 0C 76 -- 0984C0
C5 01 05 C6 16 5E 8E 14 7E 03 06 7D 8B FC 7E C5 -- 0984D0
74 C2 0B FA 56 89 F8 46 89 02 55 8B 05 8B FC 7E -- 0984E0
FF 18 76 FF 1F 7E 18 46 3B 13 45 8B F8 7E C5 2A -- 0984F0
0C 75 FF 0C 76 FF 0E 76 FF 57 52 14 76 FF 16 76 -- 098500
76 FF FE 76 FF FF 62 E9 10 C4 83 00 5C 6E EB 9A -- 098510
46 8B FF 4F E9 06 C4 83 00 4C E0 49 9A 04 6A FC -- 098520
04 6A 00 01 06 C8 57 56 CB 5E 5F C9 FE 56 8B FC -- 098530
46 C7 FE 56 89 FC 46 89 02 C4 83 00 4C E8 4E 9A -- 098540
01 00 68 00 6A 50 FE FA 86 8D 16 57 56 FF FF FA -- 098550
46 8B 00 00 05 C7 0C 7E C5 5E 5F 00 8C 00 02 9A -- 098560
7E 0A 46 3B 08 45 8B FC 7E C5 4B 74 FC 46 0B FE -- 098570
FA 86 8D 16 0A 76 FF 26 74 00 05 3D 0F 45 8B 40 -- 098580
9A 0C 75 FF 0C 76 FF 0E 76 FF 57 FE 76 FF 50 FE -- 098590
FF BF EB FE 56 89 FC 46 89 10 C4 83 00 5C 6E EB -- 0985A0
EB 06 C4 83 00 4C E0 49 9A 04 6A FC 76 FF FE 76 -- 0985B0
83 00 5C 6E 98 9A 0A 76 FF FC 76 FF FE 76 FF E6 -- 0985C0
8B 0A 7E C5 00 00 12 C8 57 56 CB 5E 5F C9 06 C4 -- 0985D0
56 89 F8 46 89 0C 56 8B 0A 46 8B EE 46 89 0C 45 -- 0985E0
C5 64 74 F8 46 0B FA 46 8B FE 56 89 FC 46 89 FA -- 0985F0
55 8B 05 8B 59 75 EE 46 3B 0C 45 8B F8 7E 01 FE -- 098600
45 8B F0 7E C5 26 74 C2 0B F2 56 89 F0 46 89 02 -- 098610
C5 12 EB 13 45 89 48 10 46 8B 09 75 0E 46 3B 13 -- 098620
45 89 48 10 46 8B 07 75 0E 46 3B 15 45 8B F0 7E -- 098630
FA 76 FF FE 56 89 FC 46 89 FA 56 8B F8 46 8B 15 -- 098640
F8 46 89 06 C4 83 00 4C DF DD 9A 04 6A F8 76 FF -- 098650
02 C4 83 00 5C 6A A6 9A 10 76 FF 94 EB FA 56 89 -- 098660
FF 0C 76 FF FC 76 FF FE 76 FF F6 56 89 F4 46 89 -- 098670
FF FE 76 FF 0A C4 83 00 4C EE 51 9A 04 6A 0A 76 -- 098680
04 6A F4 76 FF F6 76 FF 0A 76 FF 0C 76 FF FC 76 -- 098690
0C C8 57 56 CB 5E 5F C9 0E C4 83 00 4C EC 21 9A -- 0986A0
46 89 04 C4 83 00 4C DF 13 9A 04 6A 01 6A 00 00 -- 0986B0
06 C4 83 00 4C DF DD 9A 04 6A 50 52 FE 56 89 FC -- 0986C0
7E C5 0F 74 FC 46 0B FE 46 8B FE 56 89 FC 46 89 -- 0986D0
FE 46 8B D9 EB 57 52 04 74 0A 46 3B 06 45 8B FC -- 0986E0
04 74 00 01 3D 0F 45 8B FC 7E C5 0B 74 FC 46 0B -- 0986F0
04 C4 83 00 64 4E A1 9A 04 6A 01 6A 7C EB C0 2B -- 098700
7E C5 05 88 F7 7E C5 0A 46 8B F9 56 89 F7 46 89 -- 098710
45 8A 0C 7E C5 01 45 88 F7 7E C5 E4 2A 05 8A 0C -- 098720
2A 02 45 8A 0C 7E C5 02 45 88 F7 7E C5 E4 2A 01 -- 098730
FF 0C 76 FF 0E 76 FF 23 6A 03 45 88 F7 7E C5 E4 -- 098740
C4 83 00 5C ED 6E 9A 50 00 18 05 FC 46 8B FE 76 -- 098750
00 6A 00 6A F7 76 FF F9 76 FF 50 F4 46 8D 16 0A -- 098760
00 01 B8 10 C4 83 00 64 40 D0 9A 01 32 68 06 6A -- 098770
16 C8 57 56 00 6C 33 46 00 6C 33 48 CB 5E 5F C9 -- 098780
00 EA 46 C7 00 10 FC 46 C7 00 00 FE 46 C7 00 00 -- 098790

C7 79 80 3E C5 2E 00 31 05 C7 79 7C 3E C5 2E 00 -- 0987A0
3E C5 2E EE 46 89 05 8B 79 7C 3E C5 2E 00 15 05 -- 0987B0
46 C6 00 02 F2 46 C7 F0 46 89 E0 D1 05 8B 79 80 -- 0987C0
A1 9A 02 6A 09 6A 03 F6 46 C6 01 F5 46 C6 03 F4 -- 0987D0
08 75 C2 0B F9 56 89 F7 46 89 04 C4 83 00 64 4E -- 0987E0
EE 9A F7 76 FF F9 76 FF 01 29 E9 03 FC FE 46 C7 -- 0987F0
46 8D 16 50 FE 46 8D 16 04 C4 83 00 5C 73 01 FE -- 098800
2E FC 76 FF 79 88 36 FF 2E 79 8A 36 FF 2E 50 EE -- 098810
83 00 64 3D BA 9A 08 6A 06 6A 35 FF 79 84 3E C5 -- 098820
04 C4 83 00 64 4E E3 9A F7 76 FF F9 76 FF 14 C4 -- 098830
76 FF 00 6A 00 6A 00 6A 00 6A 16 74 00 FE 7E 83 -- 098840
00 EC 46 C7 00 C7 E9 0A C4 83 00 64 28 52 9A FE -- 098850
46 8D 16 38 75 00 FE 7E 83 3E 7D 04 EC 7E 83 00 -- 098860
```

671

```
8E  16  8B  2E  79  8C  06  03  2E  E0  D1  EC  46  8B  50  FE  --  098870
3E  C5  2E  35  FF  79  88  3E  C5  2E  EA  76  FF  50  52  79  --  098880
12  C4  83  00  64  3D  BA  9A  02  6A  05  6A  35  FF  79  84  --  098890
79  90  3E  C5  2E  9B  75  00  FE  7E  83  BC  EB  EC  46  FF  --  0988A0
C4  83  00  5C  74  57  9A  50  FE  46  8D  16  00  01  05  C7  --  0988B0
C6  79  94  3E  C5  2E  FF  7C  E9  03  74  00  FE  7E  83  04  --  0988C0
C6  79  9C  3E  C5  2E  00  05  C6  79  98  3E  C5  2E  00  05  --  0988D0
C6  79  A4  3E  C5  2E  00  05  C6  79  A0  3E  C5  2E  00  05  --  0988E0
C6  79  AC  3E  C5  2E  00  05  C6  79  A8  3E  C5  2E  00  05  --  0988F0
C6  79  B4  3E  C5  2E  00  05  C6  79  B0  3E  C5  2E  00  05  --  098900
C7  79  BC  3E  C5  2E  01  05  C6  79  B8  3E  C5  2E  00  05  --  098910
FE  46  C7  00  00  02  C8  57  56  CB  5E  5F  C9  00  00  05  --  098920
FE  46  8D  16  38  74  00  3D  83  79  90  3E  C5  2E  00  00  --  098930
6A  35  FF  79  84  3E  C5  2E  35  FF  79  88  3E  C5  2E  50  --  098940
74  00  FE  7E  83  0C  C4  83  00  64  3D  BA  9A  16  6A  02  --  098950
64  28  52  9A  FE  76  FF  00  6A  00  6A  00  6A  00  6A  13  --  098960
0A  7E  C5  EC  8B  55  57  56  CB  5E  5F  C9  0A  C4  83  00  --  098970
48  05  8B  79  7C  3E  C5  2E  00  00  01  45  C7  15  05  C6  --  098980
79  80  3E  C5  2E  00  00  05  45  C7  03  45  89  0A  7E  C5  --  098990
0A  45  C7  16  09  45  C6  07  45  89  0A  7E  C5  48  05  8B  --  0989A0
0C  45  89  0A  7E  C5  48  05  8B  79  7C  3E  C5  2E  00  00  --  0989B0
3E  C5  2E  0E  45  89  0A  7E  C5  05  8B  79  80  3E  C5  2E  --  0989C0
5E  5F  C9  10  45  89  0A  7E  C5  48  E0  D1  05  8B  79  80  --  0989D0
C6  4D  EB  46  C6  43  EA  46  C6  00  00  16  C8  57  56  CB  --  0989E0
C5  2E  05  8B  79  C4  3E  C5  2E  42  ED  46  C6  59  EC  46  --  0989F0
03  F1  46  C7  70  EE  46  C6  03  45  88  79  C0  3E  01  FE  --  098A00
7E  83  00  00  FE  46  C7  01  F4  46  C6  01  F7  46  C6  00  --  098A10
C6  01  F5  46  C6  02  F3  46  C6  01  1B  E9  03  7C  04  FE  --  098A20
16  2D  FE  46  03  5A  16  C5  8B  01  F8  46  C6  04  F6  46  --  098A30
FF  0C  76  FF  00  0C  EF  46  C7  FB  56  89  F9  46  89  00  --  098A40
03  2E  E7  D1  FE  7E  8B  15  6A  50  EE  46  8D  16  0A  76  --  098A50
FF  79  84  3E  C5  2E  35  FF  79  8E  1E  8E  2E  79  8C  3E  --  098A60
0A  7E  C5  12  C4  83  00  64  3D  BA  9A  03  6A  05  6A  35  --  098A70
F6  46  C6  00  03  EF  46  C7  00  BA  E9  03  74  00  3D  83  --  098A80
89  79  C2  16  8B  2E  79  C0  06  8B  2E  04  F8  46  C6  01  --  098A90
8D  16  57  0C  76  FF  00  05  EF  46  C7  FB  56  89  F9  46  --  098AA0
2E  79  8C  3E  03  2E  E7  D1  FE  7E  8B  16  6A  50  EE  46  --  098AB0
6A  05  6A  35  FF  79  84  3E  C5  2E  35  FF  79  8E  1E  8E  --  098AC0
75  00  3D  83  0A  7E  C5  12  C4  83  00  64  3D  BA  9A  03  --  098AD0
79  D0  3E  C5  2E  07  75  00  3D  83  79  C8  3E  C5  2E  61  --  098AE0
02  E7  C1  FE  7E  8B  05  DF  9B  79  D4  3E  C5  2E  05  EB  --  098AF0
FE  46  8B  1D  D9  9B  79  CE  1E  8E  2E  79  CC  3E  03  2E  --  098B00
8B  50  52  79  DA  16  8B  2E  79  D8  06  03  2E  02  E0  C1  --  098B10
ED  99  9A  05  D9  9B  79  CC  3E  03  2E  02  E7  C1  FE  7E  --  098B20
E9  FE  46  FF  0E  C4  83  00  14  EA  D9  9A  01  6A  00  5C  --  098B30

FE  46  C7  00  00  14  C8  57  56  CB  5E  5F  C9  9B  FE  DC  --  098B40
83  79  BC  3E  C5  2E  00  FB  46  C6  00  FD  46  C6  00  00  --  098B50
46  89  05  8B  79  DC  3E  C5  2E  00  87  E9  03  74  00  3D  --  098B60
00  00  F8  46  C7  EE  46  89  05  8B  79  E0  3E  C5  2E  EC  --  098B70
FE  46  8D  16  49  75  00  FE  7E  83  4F  7D  04  F8  7E  83  --  098B80
2A  FD  46  8A  50  E4  2A  FB  46  8A  50  EC  46  8D  16  50  --  098B90
8E  1E  8E  2E  79  8C  3E  03  2E  E7  D1  F8  7E  8B  50  E4  --  098BA0
BA  9A  06  6A  06  6A  35  FF  79  84  3E  C5  2E  35  FF  79  --  098BB0
EC  46  01  05  8B  79  7C  3E  C5  2E  14  C4  83  00  64  3D  --  098BC0
05  74  20  02  7D  80  79  C0  3E  C5  2E  AB  EB  F8  46  FF  --  098BD0
5F  C9  00  01  05  C7  79  BC  3E  C5  2E  00  5C  77  CF  9A  --  098BE0
86  C7  00  00  FF  18  86  C7  00  00  EC  C8  57  56  CB  5E  --  098BF0
00  02  3D  05  8B  79  E4  3E  C5  2E  00  00  FF  14  01  FE  --  098C00
EB  79  E8  36  FF  2E  79  EA  36  FF  2E  00  E6  68  0F  75  --  098C10
```

672

```
00 E6 68 1B 75 00 03 3D 05 8B 79 E4 3E C5 2E 19 -- 098C20
50 FF 1A 86 8D 16 79 EC 36 FF 2E 79 EE 36 FF 2E -- 098C30
BE 83 00 00 FF 16 86 C7 0A C4 83 00 5C ED 6E 9A -- 098C40
03 2E E7 D1 FF 16 BE 8B 01 00 E9 03 7C 04 FF 16 -- 098C50
03 75 05 23 FF 1C 86 8B 79 F2 1E 8E 2E 79 F0 3E -- 098C60
2E 79 CC 06 03 2E 02 E0 C1 FF 16 86 8B 00 DE E9 -- 098C70
3E 03 2E 02 E7 C1 FF 14 BE 8B 50 52 79 CE 16 8B -- 098C80
6A 00 5C ED 99 9A 05 D9 9B 79 DA 1E 8E 2E 79 D8 -- 098C90
FF 2E 79 C2 36 FF 2E 0E C4 83 00 14 EA D9 9A 00 -- 098CA0
2E 79 CC 3E 03 2E 02 E7 C1 FF 16 BE 8B 79 C0 36 -- 098CB0
5C ED F9 9A 00 5C ED 99 9A 05 D9 9B 79 CE 1E 8E -- 098CC0
06 8B 2E 06 C4 83 00 5C 78 E8 9A 50 08 C4 83 00 -- 098CD0
55 89 05 89 79 F4 3E C5 2E 79 C2 16 8B 2E 79 C0 -- 098CE0
F8 36 FF 2E 79 FA 36 FF 2E 50 FF 18 86 8D 16 02 -- 098CF0
16 BE 8B 16 6A 79 94 36 FF 2E 79 96 36 FF 2E 79 -- 098D00
2E 35 FF 79 8E 1E 8E 2E 79 8C 3E 03 2E E7 D1 FF -- 098D10
83 00 64 3D BA 9A 04 6A 07 6A 35 FF 79 84 3E C5 -- 098D20
6A 00 6A 00 6A 00 6A 14 74 00 FF 18 BE 83 16 C4 -- 098D30
14 86 FF 0A C4 83 00 64 28 52 9A FF 18 B6 FF 01 -- 098D40
C8 57 56 CB 5E 5F C9 9B FE F6 E9 FF 16 86 FF FF -- 098D50
79 C0 3E C5 2E 00 20 B8 00 00 FE 46 C7 00 00 04 -- 098D60
00 FC 46 C7 05 88 E4 2A 01 45 88 E4 2A 02 45 88 -- 098D70
C2 16 8B 2E 79 C0 06 8B 2E 71 7D 04 FC 7E 83 00 -- 098D80
50 FE 46 8D 16 02 55 89 05 89 79 F4 3E C5 2E 79 -- 098D90
2E 79 96 36 FF 2E 79 F8 36 FF 2E 79 FA 36 FF 2E -- 098DA0
79 8C 3E 03 2E E7 D1 FC 7E 8B 16 6A 79 94 36 FF -- 098DB0
07 6A 35 FF 79 84 3E C5 2E 35 FF 79 8E 1E 8E 2E -- 098DC0
13 74 00 FE 7E 83 16 C4 83 00 64 3D BA 9A 04 6A -- 098DD0
00 64 28 52 9A FE 76 FF 01 6A 00 6A 00 6A 00 6A -- 098DE0
04 C8 57 56 CB 5E 5F C9 89 EB FC 46 FF 0A C4 83 -- 098DF0
3D 83 79 BC 3E C5 2E 00 00 FE 46 C7 00 00 01 FE -- 098E00
7E 83 34 7D 04 FC 7E 83 00 00 FC 46 C7 61 74 00 -- 098E10
03 2E E7 D1 FC 7E 8B 50 FE 46 8D 16 2E 75 00 FE -- 098E20
FF 79 84 3E C5 2E 35 FF 79 8E 1E 8E 2E 79 8C 3E -- 098E30
FC 46 FF 0C C4 83 00 64 3D BA 9A 07 6A 02 6A 35 -- 098E40
00 6A 00 6A 00 6A 00 6A 13 74 00 FE 7E 83 C6 EB -- 098E50
79 BC 3E C5 2E 0A C4 83 00 64 28 52 9A FE 76 FF -- 098E60
46 C7 00 00 08 C8 57 56 CB 5E 5F C9 00 00 05 C7 -- 098E70
7E 8B 11 7D 03 FE 7E 83 00 00 FE 46 C7 00 00 F8 -- 098E80
2E E9 EB FE 46 FF 20 05 C6 0E 5E 8E 0C 7E 03 FE -- 098E90
00 FE 46 C7 03 45 88 0C 7E C5 05 8B 79 C4 3E C5 -- 098EA0
99 0A 46 8B 4C 7D 03 FE 7E 83 00 64 FC 46 C7 00 -- 098EB0
01 F8 7E 83 0C 7F 00 FA 7E 83 FA 46 89 FC 7E F7 -- 098EC0
FC 46 8B 00 01 F8 46 C7 1F 75 02 FE 7E 83 06 74 -- 098ED0

8B 0E 5E 8E 0C 7E 03 FE 7E 8B 0A 46 29 FA 6E F7 -- 098EE0
F7 2E 99 FC 46 8B FE 46 FF 05 88 00 30 05 FA 46 -- 098EF0
00 6C 2F 1C CB 5E 5F C9 AE EB FC 46 89 79 FC 3E -- 098F00
00 6C 2F 22 00 6C 2F 20 00 3C F5 A4 00 6C 2F 1E -- 098F10
00 6C 2F 2C 00 6C 2F 2B 00 6C 2F 2A 00 6C 2E FA -- 098F20
00 6C 2F 30 00 6C 2F 2F 00 6C 2F 2E 00 6C 2F 2D -- 098F30
00 6C 2E F8 00 6C 2F 33 00 6C 2F 32 00 6C 2F 31 -- 098F40
00 6C 2F 0C 00 24 F4 8E 00 24 F4 90 00 6C 2E F4 -- 098F50
00 6C 2E E8 00 6C 2E FC 00 24 F4 92 00 24 F4 94 -- 098F60
00 3C 93 EE 00 3C 91 4C 00 6C 32 36 00 6C 2E EA -- 098F70
57 56 00 0A 00 6C 2F 34 00 6C 2F 3F 00 6C 2E EC -- 098F80
03 75 00 01 3D 05 8B 81 88 3E C5 2E 00 00 0C C8 -- 098F90
FF 3D 05 8B 81 8C 3E C5 2E 00 01 05 C7 01 44 E9 -- 098FA0
81 94 36 FF 2E 81 96 36 FF 2E 01 36 E9 03 74 FF -- 098FB0
35 FF 81 90 3E C5 2E 35 FF 81 88 3E C5 2E 00 6A -- 098FC0
```

```
3E  C5  2E  0E  C4  83  00  64  3D  BA  9A  00  C9  68  03  6A  --  098FD0
8B  81  98  3E  C5  2E  01  8C  E9  03  74  00  3D  83  81  94  --  098FE0
FF  2E  81  96  36  FF  2E  01  07  E9  03  74  FF  FF  3D  05  --  098FF0
81  88  3E  C5  2E  04  6A  04  6A  04  6A  81  94  36  01  FE  --  099000
BA  9A  00  CA  68  05  6A  35  FF  81  90  3E  C5  2E  35  FF  --  099010
03  74  00  3D  83  81  94  3E  C5  2E  12  C4  83  00  64  3D  --  099020
E0  79  9A  81  A0  36  FF  2E  81  A2  36  FF  2E  01  45  E9  --  099030
5E  D9  9B  05  DF  9B  81  A4  3E  C5  2E  04  C4  83  00  5C  --  099040
46  D9  9B  FC  5E  D9  9B  05  DF  9B  81  A8  3E  C5  2E  F8  --  099050
46  89  08  C4  83  00  5C  ED  F9  9A  00  5C  ED  99  9A  F8  --  099060
83  00  5C  ED  F9  9A  00  5C  ED  99  9A  FC  46  D9  9B  F6  --  099070
50  81  94  36  FF  2E  81  96  36  FF  2E  F4  46  89  08  C4  --  099080
FF  81  90  3E  C5  2E  35  FF  81  88  3E  C5  2E  F6  76  FF  --  099090
C5  2E  10  C4  83  00  64  3D  BA  9A  00  C8  68  04  6A  35  --  0990A0
81  96  36  FF  2E  00  BD  E9  03  74  00  3D  83  81  94  3E  --  0990B0
6A  35  FF  81  90  3E  C5  2E  35  FF  81  88  3E  C5  2E  57  --  0990C0
F8  46  8D  16  0C  C4  83  00  64  3D  BA  9A  00  CB  68  02  --  0990D0
53  9A  00  97  E9  C0  2B  04  C4  83  00  1C  FD  19  9A  50  --  0990E0
FE  EC  E9  03  75  00  3D  83  81  94  3E  C5  2E  00  5C  81  --  0990F0
98  3E  C5  2E  81  94  36  FF  2E  81  96  36  FF  2E  76  EB  --  099100
81  9E  1E  8E  2E  81  9C  3E  03  2E  F8  8B  06  05  6B  81  --  099110
3E  03  2E  F8  8B  06  05  6B  81  98  3E  C5  2E  04  75  FF  --  099120
6B  81  98  3E  C5  2E  02  75  FF  81  9E  1E  8E  2E  81  9C  --  099130
35  FF  81  9E  1E  8E  2E  81  9C  3E  03  2E  F8  8B  06  05  --  099140
05  6A  35  FF  81  90  3E  C5  2E  35  FF  81  88  3E  C5  2E  --  099150
81  94  3E  C5  2E  12  C4  83  00  64  3D  BA  9A  00  CA  68  --  099160
83  00  5C  CC  58  9A  64  6A  FE  BB  E9  03  75  00  3D  83  --  099170
6A  EC  8B  55  57  56  CB  5E  5F  C9  9B  00  64  B8  02  C4  --  099180
76  FF  0C  76  FF  81  A0  36  FF  2E  81  A2  36  FF  2E  28  --  099190
55  57  56  CB  5E  5F  C9  0A  C4  83  00  5C  ED  6E  9A  0A  --  0991A0
F2  E9  03  74  00  01  3D  05  8B  81  88  3E  C5  2E  EC  8B  --  0991B0
36  FF  2E  3B  74  FF  FF  3D  05  8B  81  8C  3E  C5  2E  00  --  0991C0
FF  81  90  3E  C5  2E  00  6A  50  81  94  36  FF  2E  81  96  --  0991D0
C5  2E  0E  C4  83  00  64  3D  BA  9A  00  C9  68  03  6A  35  --  0991E0
83  00  5C  CC  58  9A  64  6A  10  74  00  3D  83  81  94  3E  --  0991F0
8B  81  98  3E  C5  2E  00  AD  E9  00  64  B8  02  C4  01  FE  --  099200
81  94  36  FF  2E  81  96  36  FF  2E  6C  74  FF  FF  3D  05  --  099210
FF  81  9E  1E  8E  2E  81  9C  3E  03  2E  F8  8B  06  05  6B  --  099220
9C  3E  03  2E  F8  8B  06  05  6B  81  98  3E  C5  2E  04  75  --  099230
05  6B  81  98  3E  C5  2E  02  75  FF  81  9E  1E  8E  2E  81  --  099240
6A  35  FF  81  9E  1E  8E  2E  81  9C  3E  03  2E  F8  8B  06  --  099250
3D  BA  9A  00  CA  68  05  6A  35  FF  81  90  3E  C5  2E  00  --  099260
E9  03  74  00  3D  83  81  94  3E  C5  2E  12  C4  83  00  64  --  099270

94  36  FF  2E  81  96  36  FF  2E  00  1C  FB  2F  9A  FF  78  --  099280
6A  35  FF  81  90  3E  C5  2E  35  FF  81  88  3E  C5  2E  81  --  099290
88  3E  C5  2E  0C  C4  83  00  64  3D  BA  9A  00  CC  68  02  --  0992A0
EC  8B  55  57  56  CB  5E  5F  C9  C0  2B  FF  FF  05  C7  81  --  0992B0
05  C7  04  75  00  05  3D  05  8B  05  FF  81  8C  3E  C5  2E  --  0992C0
74  00  3D  83  81  94  3E  C5  2E  00  5C  81  53  9A  00  00  --  0992D0
02  EB  00  64  B8  02  C4  83  00  5C  CC  58  9A  64  6A  0F  --  0992E0
81  8C  3E  C5  2E  EC  8B  55  57  56  CB  5E  5F  C9  C0  2B  --  0992F0
3D  83  81  94  3E  C5  2E  00  5C  81  53  9A  00  00  05  C7  --  099300
00  64  B8  02  C4  83  00  5C  CC  58  9A  64  6A  0F  74  00  --  099310
3E  C5  2E  EC  8B  55  57  56  CB  5E  5F  C9  C0  2B  02  EB  --  099320
81  94  3E  C5  2E  00  5C  81  53  9A  00  01  05  C7  81  8C  --  099330
B8  02  C4  83  00  5C  CC  58  9A  64  6A  0F  74  00  3D  83  --  099340
2E  EC  8B  55  57  56  CB  5E  5F  C9  C0  2B  02  EB  00  64  --  099350
3E  C5  2E  00  5C  81  53  9A  00  02  05  C7  81  8C  3E  C5  --  099360
C4  83  00  5C  CC  58  9A  64  6A  0F  74  00  3D  83  81  94  --  099370
```

674

```
8B 55 57 56 CB 5E 5F C9 C0 2B 02 EB 00 64 B8 02 -- 099380
2E 00 5C 81 53 9A 00 03 05 C7 81 8C 3E C5 2E EC -- 099390
00 5C CC 58 9A 64 6A 0F 74 00 3D 83 81 94 3E C5 -- 0993A0
57 56 CB 5E 5F C9 C0 2B 02 EB 00 64 B8 02 C4 83 -- 0993B0
5C 81 53 9A 00 04 05 C7 81 8C 3E C5 2E EC 8B 55 -- 0993C0
CC 58 9A 64 6A 0F 74 00 3D 83 81 94 3E C5 2E 00 -- 0993D0
CB 5E 5F C9 C0 2B 02 EB 00 64 B8 02 C4 83 00 5C -- 0993E0
07 3D 05 8B 05 FF 81 98 3E C5 2E EC 8B 55 57 56 -- 0993F0
FF 2E 81 96 36 FF 2E 00 00 05 C7 04 75 00 01 FE -- 099400
3E 03 2E F8 8B 06 05 6B 81 98 3E C5 2E 81 94 36 -- 099410
6B 81 98 3E C5 2E 04 75 FF 81 9E 1E 8E 2E 81 9C -- 099420
75 FF 81 9E 1E 8E 2E 81 9C 3E 03 2E F8 8B 06 05 -- 099430
81 9C 3E 03 2E F8 8B 06 05 6B 81 98 3E C5 2E 02 -- 099440
C5 2E 35 FF 81 88 3E C5 2E 35 FF 81 9E 1E 8E 2E -- 099450
83 00 64 3D BA 9A 00 CA 68 05 6A 35 FF 81 90 3E -- 099460
58 9A 64 6A 0F 74 00 3D 83 81 94 3E C5 2E 12 C4 -- 099470
5E 5F C9 C0 2B 02 EB 00 64 B8 02 C4 83 00 5C CC -- 099480
2E 00 02 05 C7 81 98 3E C5 2E EC 8B 55 57 56 CB -- 099490
03 2E F8 8B 06 05 6B 81 94 36 FF 2E 81 96 36 FF -- 0994A0
81 98 3E C5 2E 04 75 FF 81 9E 1E 8E 2E 81 9C 3E -- 0994B0
FF 81 9E 1E 8E 2E 81 9C 3E 03 2E F8 8B 06 05 6B -- 0994C0
9C 3E 03 2E F8 8B 06 05 6B 81 98 3E C5 2E 02 75 -- 0994D0
FF 81 90 3E C5 2E 00 6A 35 FF 81 9E 1E 8E 2E 81 -- 0994E0
C5 2E 12 C4 83 00 64 3D BA 9A 00 CA 68 05 6A 35 -- 0994F0
83 00 5C CC 58 9A 64 6A 0D 74 00 3D 83 81 94 3E -- 099500
C5 2E EC 8B 55 57 56 CB 5E 5F C9 00 64 B8 02 C4 -- 099510
94 3E C5 2E 00 5C 80 E1 9A 00 00 05 C7 81 98 3E -- 099520
02 C4 83 00 5C CC 58 9A 64 6A 0F 74 00 3D 83 81 -- 099530
EC 8B 55 57 56 CB 5E 5F C9 C0 2B 02 EB 00 64 B8 -- 099540
C5 2E 00 5C 80 E1 9A 00 01 05 C7 81 98 3E C5 2E -- 099550
83 00 5C CC 58 9A 64 6A 0F 74 00 3D 83 81 94 3E -- 099560
55 57 56 CB 5E 5F C9 C0 2B 02 EB 00 64 B8 02 C4 -- 099570
00 5C 80 E1 9A 00 02 05 C7 81 98 3E C5 2E EC 8B -- 099580
5C CC 58 9A 64 6A 0F 74 00 3D 83 81 94 3E C5 2E -- 099590
56 CB 5E 5F C9 C0 2B 02 EB 00 64 B8 02 C4 83 00 -- 0995A0
80 E1 9A 00 03 05 C7 81 98 3E C5 2E EC 8B 55 57 -- 0995B0
58 9A 64 6A 0F 74 00 3D 83 81 94 3E C5 2E 00 5C -- 0995C0
5E 5F C9 C0 2B 02 EB 00 64 B8 02 C4 83 00 5C CC -- 0995D0
9A 00 04 05 C7 81 98 3E C5 2E EC 8B 55 57 56 CB -- 0995E0
64 6A 0F 74 00 3D 83 81 94 3E C5 2E 00 5C 80 E1 -- 0995F0
2B 02 EB 00 64 B8 02 C4 83 00 5C CC 58 9A 01 FE -- 099600
C7 81 98 3E C5 2E EC 8B 55 57 56 CB 5E 5F C9 C0 -- 099610

00 3D 83 81 94 3E C5 2E 00 5C 80 E1 9A 00 05 05 -- 099620
EB 00 64 B8 02 C4 83 00 5C CC 58 9A 64 6A 0F 74 -- 099630
98 3E C5 2E EC 8B 55 57 56 CB 5E 5F C9 C0 2B 02 -- 099640
83 81 94 3E C5 2E 00 5C 80 E1 9A 00 06 05 C7 81 -- 099650
64 B8 02 C4 83 00 5C CC 58 9A 64 6A 0F 74 00 3D -- 099660
FF 2E EC 8B 55 57 56 CB 5E 5F C9 C0 2B 02 EB 00 -- 099670
06 05 6B 81 98 3E C5 2E 81 94 36 FF 2E 81 96 36 -- 099680
2E 04 75 FF 81 9E 1E 8E 2E 81 9C 3E 03 2E F8 8B -- 099690
8E 2E 81 9C 3E 03 2E F8 8B 06 05 6B 81 98 3E C5 -- 0996A0
F8 8B 06 05 6B 81 98 3E C5 2E 02 75 FF 81 9E 1E -- 0996B0
88 3E C5 2E 35 FF 81 9E 1E 8E 2E 81 9C 3E 03 2E -- 0996C0
9A 00 CA 68 05 6A 35 FF 81 90 3E C5 2E 35 FF 81 -- 0996D0
EC 8B 55 57 56 CB 5E 5F C9 12 C4 83 00 64 3D BA -- 0996E0
FF 81 8C 3E C5 2E 81 94 36 FF 2E 81 96 36 FF 2E -- 0996F0
6A 35 FF 81 90 3E C5 2E 35 FF 81 88 3E C5 2E 35 -- 099700
CB 5E 5F C9 0E C4 83 00 64 3D BA 9A 00 C9 68 03 -- 099710
00 6C 2F D2 00 3C F5 A4 00 6C 2F A0 00 6C 2F D0 -- 099720
```

```
00 6C 2F D8 00 6C 2F D4 00 6C 2F A4 00 6C 2F A2 -- 099730
FF 2E 50 0A 46 8D 16 EC 8B 55 57 56 00 6C 2F DA -- 099740
08 C4 83 00 5C 82 37 9A 89 04 36 FF 2E 89 06 36 -- 099750
76 FF 50 0E 46 8D 16 EC 8B 55 57 56 CB 5E 5F C9 -- 099760
CB 5E 5F C9 08 C4 83 00 5C 82 37 9A 0A 76 FF 0C -- 099770
56 8B 0A 46 8B 08 08 EE 46 C7 00 00 12 C8 57 56 -- 099780
F8 46 89 0C 56 8B 0A 46 8B F6 56 89 F4 46 89 0C -- 099790
C4 83 00 64 5C 0E 9A 0A 76 FF 0C 76 FF FA 56 89 -- 0997A0
8D 16 50 0E 46 8D 16 FF FF F2 46 C7 F0 46 89 04 -- 0997B0
56 CB 5E 5F C9 08 C4 83 00 5C 82 37 9A 50 EE 46 -- 0997C0
0E 46 83 0E 5E C5 00 00 F2 46 C7 00 00 5C C8 57 -- 0997D0
FF EE 5E C5 F0 56 89 EE 46 89 02 57 8B 07 8B 04 -- 0997E0
2E 43 43 00 05 B9 82 70 BB F0 8B 98 07 8A EE 46 -- 0997F0
00 09 00 00 0A 67 FF 2E 3F 75 F9 E0 07 3B 01 FE -- 099800
82 D5 82 86 82 86 82 86 86 06 00 25 00 20 00 0A -- 099810
5C 88 D9 9A 0A 76 FF 0C 76 FF 0A 76 FF 0C 76 FF -- 099820
83 06 C4 83 00 64 5C 82 9A 50 F8 8B 04 C4 83 00 -- 099830
36 42 9A 0A 76 FF 0C 76 FF 03 59 E9 AA 75 FF FF -- 099840
0C 76 FF 91 74 F1 3B F9 8B C8 8B 04 C4 83 00 64 -- 099850
C5 03 31 E9 06 C4 83 00 64 5C 82 9A 57 0A 76 FF -- 099860
B8 05 75 00 2A 3D F0 8B 98 07 8A EE 46 FF EE 5E -- 099870
C5 0B 74 00 F8 7E 83 F8 46 89 C0 2B 02 EB 00 01 -- 099880
83 00 00 FC 46 C7 F0 8B 98 07 8A EE 46 FF EE 5E -- 099890
8B C8 8B 0A FC 46 6B 1D 7F 39 FE 83 22 7C 30 FE -- 0998A0
8A EE 46 FF EE 5E C5 FC 46 89 00 30 2D C1 03 C6 -- 0998B0
02 EB 00 01 B8 05 75 6C FE 83 D9 EB F0 8B 98 07 -- 0998C0
2B 02 EB 00 01 B8 05 75 68 FE 83 F6 46 89 C0 2B -- 0998D0
0B 74 00 F4 7E 83 06 75 00 F6 7E 83 F4 46 89 C0 -- 0998E0
83 74 BB C6 8B F0 8B 98 07 8A EE 46 FF EE 5E C5 -- 0998F0
22 67 FF 2E 48 75 F9 E0 07 3B 2E 43 43 00 11 B9 -- 099900
00 58 00 4F 00 4E 00 46 00 45 00 44 00 25 00 00 -- 099910
00 73 00 6F 00 6E 00 66 00 65 00 64 00 63 00 5B -- 099920
83 E6 83 F0 84 61 84 61 83 DC 82 AD 86 06 00 78 -- 099930
83 E9 83 F3 84 64 84 64 83 DF 85 23 84 B5 83 FA -- 099940
24 05 89 04 06 8B 2E 89 06 36 FF 2E 83 FD 85 45 -- 099950
1C 9A 08 C4 83 00 64 5B 4E 9A 89 08 68 0E 50 00 -- 099960
1C EB 00 0A FE 46 C7 F6 46 FF 02 2A E9 00 2C AC -- 099970
FE 46 C7 F6 46 FF 12 EB 00 08 FE 46 C7 F6 46 FF -- 099980
FA 46 8D 16 00 10 FE 46 C7 F6 46 FF 08 EB 00 00 -- 099990
86 22 9A 0A 76 FF 0C 76 FF FE 76 FF FC 76 FF 50 -- 0999A0
75 00 FA 7E 83 EC 56 89 EA 46 89 0C C4 83 00 5C -- 0999B0

F6 7E 83 FE 21 E9 03 74 00 F8 7E 83 01 DC E9 03 -- 0999C0
57 89 07 89 1F C5 04 0E 46 83 0E 5E C5 10 74 00 -- 0999D0
1F C5 04 0E 46 83 0E 5E C5 00 F4 7E 83 12 EB 02 -- 0999E0
8D 16 F6 46 FF FD F3 E9 F2 46 FF 07 89 EA 46 8B -- 0999F0
92 9A 0A 76 FF 0C 76 FF FC 76 FF 50 FA 46 01 FE -- 099A00
E9 03 75 00 FA 7E 83 E6 5E DD 0A C4 83 00 5C 87 -- 099A10
74 00 F6 7E 83 FD C5 E9 03 74 00 F8 7E 83 01 80 -- 099A20
EB 1F DD E6 46 DD 1F C5 04 0E 46 83 0E 5E C5 10 -- 099A30
EB 1F D9 E6 46 DD 1F C5 04 0E 46 83 0E 5E C5 B6 -- 099A40
FF EE 5E C5 AC 56 89 AA 46 89 5A 16 AE 46 8D A6 -- 099A50
EB 00 01 B8 05 75 00 5E 3D F0 8B 98 07 8A EE 46 -- 099A60
FF EE 5E C5 0B 74 00 A8 7E 83 A8 46 89 C0 2B 02 -- 099A70
0C 74 5D FE 83 11 74 F6 0B F0 8B 98 07 8A EE 46 -- 099A80
C6 AA 5E C5 E0 EB 07 88 C6 8B AA 46 FF AA 5E C5 -- 099A90
0C 76 FF AC 56 89 AA 46 89 5A 16 AE 46 8D 00 07 -- 099AA0
83 3F EB F8 8B 04 C4 83 00 64 36 42 9A 0A 76 FF -- 099AB0
0A 76 FF 0C 76 FF 00 01 FC 46 C7 05 75 00 FC 7E -- 099AC0
EB 89 1D AA 46 C7 F8 8B 04 C4 83 00 64 36 42 9A -- 099AD0
```

676

```
8B  04  C4  83  00  5C  88  D9  9A  0A  76  FF  0C  76  FF  15  --  099AE0
7E  83  00  01  A8  46  C7  AC  4E  8C  89  1E  AA  46  C7  F8  --  099AF0
02  57  8B  07  8B  04  0E  46  83  0E  5E  C5  12  75  00  F8  --  099B00
4E  74  FF  FF  83  00  00  FA  46  C7  A6  56  89  A4  46  89  --  099B10
0B  06  C4  83  00  64  5B  82  9A  AA  76  FF  AC  76  FF  57  --  099B20
FF  2F  75  A8  46  3B  C0  2B  02  EB  00  01  B8  05  75  C2  --  099B30
C7  8B  A4  46  FF  A4  5E  C5  0A  75  00  F8  7E  83  FA  46  --  099B40
FF  0C  76  FF  BF  EB  FF  FF  BF  05  75  FC  4E  FF  07  88  --  099B50
FF  83  AD  EB  F8  8B  04  C4  83  00  64  36  42  9A  0A  76  --  099B60
83  00  64  5C  82  9A  57  0A  76  FF  0C  76  FF  0F  74  FF  --  099B70
5F  E9  03  74  00  F8  7E  83  1A  74  00  FA  7E  83  06  C4  --  099B80
E9  00  07  C6  A4  5E  C5  FE  5E  E9  03  75  63  FE  83  FC  --  099B90
74  00  60  07  F7  0A  5E  C5  0E  75  00  F2  7E  83  FE  55  --  099BA0
57  56  CB  5E  5F  C9  9B  F2  46  8B  03  EB  FF  FF  B8  05  --  099BB0
C7  00  00  FC  46  C7  10  7E  8B  0E  76  8B  00  00  0E  C8  --  099BC0
00  20  BF  03  7E  20  FF  83  05  7E  FF  0B  00  00  FE  46  --  099BD0
88  D9  9A  0A  76  FF  0C  76  FF  00  00  07  C7  12  5E  C5  --  099BE0
01  B8  05  75  2D  FA  7E  83  FA  46  89  04  C4  83  00  5C  --  099BF0
7E  83  06  75  C0  0B  F6  46  89  C0  2B  02  EB  00  01  FE  --  099C00
83  00  64  36  42  9A  0A  76  FF  0C  76  FF  16  75  2B  FA  --  099C10
7C  3F  3B  12  5E  C5  07  FF  12  5E  C5  FA  46  89  04  C4  --  099C20
40  EB  00  0A  BE  05  74  30  FA  7E  83  4B  75  F6  0B  4F  --  099C30
46  89  04  C4  83  00  64  36  42  9A  0A  76  FF  0C  76  FF  --  099C40
78  FA  7E  83  24  7C  F9  3B  0F  8B  07  FF  12  5E  C5  FA  --  099C50
0A  76  FF  0C  76  FF  00  10  BE  19  EB  00  08  BE  05  74  --  099C60
07  FF  12  5E  C5  FA  46  89  04  C4  83  00  64  36  42  9A  --  099C70
F8  46  89  00  57  2D  FA  46  8B  79  7E  3F  3B  12  5E  C5  --  099C80
0A  3D  F8  46  89  00  37  2D  FA  46  8B  21  7D  00  0A  3D  --  099C90
0B  7C  C0  0B  F8  46  89  00  30  2D  FA  46  8B  13  7D  00  --  099CA0
40  75  10  FE  83  1A  7F  F8  76  3B  05  7F  09  F8  7E  83  --  099CB0
46  89  00  78  2D  FA  46  8B  38  75  FE  46  0B  FC  46  8B  --  099CC0
16  F4  56  89  F2  46  89  99  F8  46  8B  2B  75  C0  0B  F8  --  099CD0
C4  83  00  5C  EE  E2  9A  50  52  99  C6  8B  50  FC  46  8D  --  099CE0
FF  6A  E9  FE  56  89  FC  46  89  F4  56  1B  F2  46  2B  08  --  099CF0
C4  83  00  64  5C  82  9A  FA  76  FF  0A  76  FF  0C  76  FF  --  099D00
8B  0D  EB  FE  56  8B  FC  46  8B  08  74  00  F6  7E  83  06  --  099D10
CB  5E  5F  C9  00  DA  83  D8  F7  DA  F7  FE  56  8B  FC  46  --  099D20
DA  46  89  5A  16  DE  46  8D  FF  2B  00  00  26  C8  57  56  --  099D30
C7  05  7E  20  0E  7E  83  06  7E  00  0E  7E  83  DC  56  89  --  099D40
07  8B  10  5E  C5  00  00  07  C7  10  5E  C5  00  20  0E  46  --  099D50

42  9A  0A  76  FF  0C  76  FF  00  F8  E9  03  7C  0E  46  3B  --  099D60
43  43  00  12  B9  87  EE  BB  F0  8B  04  C4  83  00  64  36  --  099D70
00  09  24  67  FF  2E  00  C7  E9  03  74  F9  E0  07  3B  2E  --  099D80
00  32  00  31  00  30  00  2E  00  2D  00  2B  00  20  00  0A  --  099D90
00  45  00  39  00  38  00  37  00  36  00  35  00  34  00  33  --  099DA0
88  69  88  5F  88  49  88  49  88  38  88  38  88  38  00  65  --  099DB0
88  69  88  69  88  69  88  69  88  69  88  69  88  69  88  69  --  099DC0
C5  0F  FF  10  5E  C5  77  75  FF  0B  88  7C  88  7C  88  69  --  099DD0
61  75  06  FF  83  05  74  FF  0B  FF  74  E9  07  FF  10  5E  --  099DE0
01  FF  83  E2  EB  07  88  C6  8B  DA  46  FF  DA  5E  C5  47  --  099DF0
01  FF  83  0A  74  FF  0B  EA  EB  00  02  BF  27  7F  01  FE  --  099E00
7C  03  FF  83  D7  EB  00  03  BF  19  75  03  FF  83  05  74  --  099E10
C0  EB  03  FF  83  C8  EB  00  06  BF  2D  7F  05  FF  83  32  --  099E20
BF  05  75  05  FF  83  05  74  04  FF  83  0A  74  02  FF  83  --  099E30
07  BF  05  75  07  FF  83  05  74  06  FF  83  AF  EB  00  05  --  099E40
83  00  64  5C  82  9A  56  0A  76  FF  0C  76  FF  A0  EB  00  --  099E50
39  24  9A  50  DE  46  8D  16  00  07  C6  DA  5E  C5  06  C4  --  099E60
76  FF  EC  8B  55  57  56  CB  5E  5F  C9  04  C4  83  00  64  --  099E70
20  3D  F0  8B  04  C4  83  00  64  36  42  9A  0A  76  FF  0C  --  099E80
```

```
C9 C6 8B E1 74 09 FE 83 E6 74 0A FE 83 EB 74 00 -- 099E90
6D 72 6F 66 20 64 61 42 00 24 FE 8E 00 CB 5E 5F -- 099EA0
0A 09 00 00 0A 66 6E 61 63 73 20 6E 69 20 74 61 -- 099EB0
8B 05 FF 8F E2 3E C5 2E 00 00 40 C8 57 56 00 20 -- 099EC0
83 8F E6 3E C5 2E 00 01 05 C7 04 7E 00 04 3D 05 -- 099ED0
8B 8F E2 3E C5 2E 20 75 03 12 7E 83 58 7E 00 3D -- 099EE0
8F EA 36 FF 2E 8F EC 36 FF 2E 46 75 00 01 3D 05 -- 099EF0
8B 8F E2 3E C5 2E 32 EB 04 C4 83 00 5C 97 1E 9A -- 099F00
EE 36 FF 2E 8F F0 36 FF 2E 50 0D 75 00 01 3D 05 -- 099F10
2E 8F F4 36 FF 2E 35 FF 8F E2 3E C5 2E 11 EB 8F -- 099F20
10 12 7E 83 06 C4 83 00 5C 97 1E 9A 8F F2 36 FF -- 099F30
8F E6 3E C5 2E 1D D9 9B 18 7E C5 EE D9 9B 2B 7E -- 099F40
9A 8F F6 36 FF 2E 8F F8 36 FF 2E 12 7E 00 3D 83 -- 099F50
3E C5 2E 06 10 E9 FF FF B8 04 C4 83 00 5C 97 1E -- 099F60
03 74 03 12 7E 83 00 D0 E9 03 7F 00 3D 83 8F E6 -- 099F70
7E C5 00 5C ED 99 9A 05 D9 9B 0E 7E C5 00 C7 E9 -- 099F80
D9 9B 0A 7E C5 00 5C ED 99 9A 00 80 85 D9 9B 0A -- 099F90
ED 99 9A 05 D9 9B 0A 7E C5 00 5C ED 99 9A 40 45 -- 099FA0
5C 97 1E 9A 8F FA 36 FF 2E 8F FC 36 FF 2E 00 5C -- 099FB0
00 5C ED 99 9A 04 45 D9 9B 0E 7E C5 24 C4 83 00 -- 099FC0
0A 7E C5 00 5C ED 99 9A 00 84 85 D9 9B 0A 7E C5 -- 099FD0
04 45 D9 9B 0A 7E C5 00 5C ED 99 9A 44 45 D9 9B -- 099FE0
9A 8F FE 36 FF 2E 90 00 36 FF 2E 00 5C ED 99 9A -- 099FF0
08 45 D9 9B 0E 7E C5 24 C4 83 00 5C 97 1E 01 FE -- 09A000
ED 99 9A 00 88 85 D9 9B 0A 7E C5 00 5C ED 99 9A -- 09A010
7E C5 00 5C ED 99 9A 48 45 D9 9B 0A 7E C5 00 5C -- 09A020
2E 90 04 36 FF 2E 00 5C ED 99 9A 08 45 D9 9B 0A -- 09A030
00 DE 46 C7 24 C4 83 00 5C 97 1E 9A 90 02 36 FF -- 09A040
FD 03 E7 D1 DE 7E 8B 11 7D 12 46 3B DE 46 8B 00 -- 09A050
90 06 06 DD 2E 9B E7 EB DE 46 FF E0 45 89 1F 16 -- 09A060
46 3B DE 46 8B 00 00 DE 46 C7 1D D9 9B 18 7E C5 -- 09A070
DA 46 89 CC 5E D9 9B EE D9 9B 03 BD E9 03 7C 12 -- 09A080
46 89 DE 46 8B 00 A0 E9 03 7C 12 46 3B DA 46 8B -- 09A090
9B EE D9 9B 00 89 E9 03 7C 12 46 3B DC 46 8B DC -- 09A0A0
03 06 E7 C1 DA 7E 8B 02 E6 C1 DC 76 8B C0 5E DD -- 09A0B0
94 9A C0 5E DC 9B 05 D9 9B FE 03 0C 5E 8E 0A 7E -- 09A0C0
E7 C1 DA 7E 8B 02 E6 C1 DC 76 8B 19 76 00 5C ED -- 09A0D0
76 8B 1A EB 05 D9 9B FE 03 0C 5E 8E 0A 7E 03 06 -- 09A0E0
0C 5E 8E 0A 7E 03 06 E7 C1 DA 7E 8B 02 E6 C1 DC -- 09A0F0

D0 46 D9 9B D0 5E D9 9B E0 D9 9B 05 D9 9B FE 03 -- 09A100
9B D0 46 D9 9B 14 76 00 5C ED 94 9A CC 5E D8 9B -- 09A110
FF D8 46 89 DC 46 8B D6 46 89 DA 46 8B CC 5E D9 -- 09A120
DD 9B EE D9 9B FF 55 E9 DA 46 FF FF 6C E9 DC 46 -- 09A130
76 00 5C ED 94 9A C0 5E DC 9B CC 46 D9 9B C0 5E -- 09A140
2E 9B E0 D9 9B CC 46 D9 9B 07 EB CC 46 D9 9B 06 -- 09A150
7E C5 EE D9 9B 2B 73 00 5C ED 94 9A 90 0E 1E DC -- 09A160
FF 2E 12 7E 00 3D 83 8F E6 3E C5 2E 1D D9 9B 18 -- 09A170
04 C4 83 00 5C 97 1E 9A 90 16 36 FF 2E 90 18 36 -- 09A180
B5 E9 03 75 DE 46 3B D6 46 8B 03 E9 E9 FF FE B8 -- 09A190
DE 46 8B 1D D9 9B E0 D9 9B 05 D9 9B 18 7E C5 00 -- 09A1A0
E6 C1 DC 76 8B 60 7D 12 46 3B DC 46 8B DC 46 89 -- 09A1B0
9B FE 03 0C 5E 8E 0A 7E 03 06 E7 C1 D6 7E 8B 02 -- 09A1C0
C1 DE 7E 8B 02 E6 C1 DC 76 8B C8 5E D9 9B 05 D9 -- 09A1D0
02 E6 C1 DC 76 8B 05 D9 9B FE 03 0A 7E 03 06 E7 -- 09A1E0
76 8B 1D D9 9B FE 03 0A 7E 03 06 E7 C1 D6 7E 8B -- 09A1F0
03 0A 7E 03 06 E7 C1 DE 7E 8B 02 E6 C1 DC 01 FE -- 09A200
D6 7E 8B 98 EB DC 46 FF 1D D9 9B C8 46 D9 9B FE -- 09A210
C8 5E D9 9B 05 D9 9B 10 5E 8E 0E 7E 03 02 E7 C1 -- 09A220
C1 D6 7E 8B 05 D9 9B 0E 7E 03 02 E7 C1 DE 7E 8B -- 09A230
```

678

```
7E  03  02  E7  C1  DE  7E  8B  1D  D9  9B  0E  7E  03  02  E7  --  09A240
03  75  DE  46  3B  D8  46  8B  1D  D9  9B  C8  46  D9  9B  0E  --  09A250
C7  1D  D9  9B  E0  D9  9B  05  D9  9B  18  7E  C5  00  AF  E9  --  09A260
C1  D8  76  8B  60  7D  12  46  3B  DA  46  8B  00  00  DA  46  --  09A270
FE  03  0C  5E  8E  0A  7E  03  06  E7  C1  DA  7E  8B  02  E6  --  09A280
DA  7E  8B  02  E6  C1  DE  76  8B  C8  5E  D9  9B  05  D9  9B  --  09A290
E6  C1  D8  76  8B  05  D9  9B  FE  03  0A  7E  03  06  E7  C1  --  09A2A0
8B  1D  D9  9B  FE  03  0A  7E  03  06  E7  C1  DA  7E  8B  02  --  09A2B0
FE  03  0A  7E  03  06  E7  C1  DA  7E  8B  02  E6  C1  DE  76  --  09A2C0
D1  D8  7E  8B  98  EB  DA  46  FF  1D  D9  9B  C8  46  D9  9B  --  09A2D0
E7  D1  DE  7E  8B  D4  46  89  E0  45  8B  1F  16  FD  03  E7  --  09A2E0
1F  16  FD  03  E7  D1  D8  7E  8B  E0  45  8B  1F  16  FD  03  --  09A2F0
89  D4  46  8B  1F  16  FD  03  E7  D1  DE  7E  8B  E0  45  89  --  09A300
7E  03  06  E7  C1  DE  7E  8B  02  E6  C1  DE  76  8B  E0  45  --  09A310
46  D9  9B  C8  5E  D9  9B  05  D9  9B  FE  03  0C  5E  8E  0A  --  09A320
46  3B  48  12  46  8B  1D  D9  9B  0D  D8  9B  18  7E  C5  C8  --  09A330
12  46  3B  DC  46  8B  DC  46  89  40  DE  46  8B  35  7E  DE  --  09A340
7E  03  06  E7  C1  DE  7E  8B  02  E6  C1  DC  76  8B  26  7D  --  09A350
3D  D8  9B  E0  D9  9B  C8  46  D9  9B  FE  03  0C  5E  8E  0A  --  09A360
7E  03  02  E7  C1  DE  7E  8B  D2  EB  DC  46  FF  1D  D9  9B  --  09A370
D9  9B  3D  D8  9B  E0  D9  9B  C8  46  D9  9B  10  5E  8E  0E  --  09A380
DE  46  8B  00  A2  E9  03  7F  DE  46  3B  48  12  46  8B  1D  --  09A390
8B  00  90  E9  03  7C  12  46  3B  DA  46  8B  DA  46  89  40  --  09A3A0
5E  8E  0A  7E  03  06  E7  C1  DA  7E  8B  02  E6  C1  DE  76  --  09A3B0
46  89  40  DE  46  8B  C8  5E  D9  9B  05  D9  9B  FE  03  0C  --  09A3C0
8B  02  E6  C1  DC  76  8B  3A  7D  12  46  3B  DC  46  8B  DC  --  09A3D0
02  E0  C1  FE  03  0C  5E  8E  0A  7E  03  06  E7  C1  DA  7E  --  09A3E0
F1  03  0C  46  8E  0A  76  03  06  E6  C1  DE  76  8B  C8  8B  --  09A3F0
1D  D9  9B  05  D8  9B  0C  D8  26  9B  C8  46  D9  9B  01  FE  --  09A400
5E  8E  0E  7E  03  02  E7  C1  DA  7E  8B  BE  EB  DC  46  FF  --  09A410
46  D9  9B  10  46  8E  0E  76  03  02  E6  C1  DE  76  8B  10  --  09A420
65  E9  DA  46  FF  1D  D9  9B  05  D8  9B  0C  D8  26  9B  C8  --  09A430
3B  DE  46  8B  00  00  DE  46  C7  FC  38  E9  DE  46  FF  FF  --  09A440
46  89  48  DE  46  2B  12  46  8B  00  82  E9  03  7C  12  46  --  09A450
05  D9  9B  10  5E  8E  0E  7E  03  02  E7  C1  D4  7E  8B  D4  --  09A460
D4  46  8B  43  7D  12  46  3B  40  C8  5E  D9  9B  E0  D9  9B  --  09A470
C1  DC  7E  8B  34  7D  12  46  3B  DC  46  8B  DC  46  89  40  --  09A480
F7  03  0C  46  8E  0A  76  03  06  E6  C1  D4  76  8B  02  E7  --  09A490

9B  05  D9  9B  10  5E  8E  0E  7E  03  02  E7  C1  DC  7E  8B  --  09A4A0
C4  EB  DC  46  FF  C8  5E  D9  9B  C8  46  D8  9B  0C  D8  26  --  09A4B0
C8  46  D9  9B  10  5E  8E  0E  7E  03  02  E7  C1  D4  7E  8B  --  09A4C0
46  8B  00  00  DE  46  C7  FF  73  E9  DE  46  FF  1D  D9  9B  --  09A4D0
8E  0E  7E  03  02  E7  C1  DE  7E  8B  2C  7D  12  46  3B  DE  --  09A4E0
7D  8B  1F  16  FD  03  E7  D1  DE  7E  8B  05  D9  9B  10  5E  --  09A4F0
DE  46  FF  1D  D9  9B  16  5E  8E  14  7E  03  02  E7  C1  E0  --  09A500
03  12  7E  83  65  7E  00  3D  83  8F  E6  3E  C5  2E  CC  EB  --  09A510
7E  C5  00  5C  ED  99  9A  08  45  D9  9B  14  7E  C5  4D  75  --  09A520
05  D9  9B  14  7E  C5  00  5C  ED  99  9A  04  45  D9  9B  14  --  09A530
9A  90  1A  36  FF  2E  90  1C  36  FF  2E  00  5C  ED  99  9A  --  09A540
04  3D  05  8B  8F  E2  3E  C5  2E  1C  C4  83  00  5C  97  1E  --  09A550
2E  0A  EB  90  1E  36  FF  2E  90  20  36  FF  2E  1E  75  00  --  09A560
C4  83  00  5C  97  1E  9A  90  22  36  FF  2E  90  24  36  FF  --  09A570
00  24  31  54  00  6C  09  68  CB  5E  5F  C9  9B  C0  2B  04  --  09A580
00  6C  07  30  00  6C  07  23  00  6C  06  F8  00  6C  06  D4  --  09A590
00  00  00  00  00  6C  08  04  00  6C  07  B9  00  6C  07  6E  --  09A5A0
00  6C  08  4F  3F  1A  36  E2  EB  1C  43  2D  3F  F0  00  00  --  09A5B0
8B  55  57  56  00  6C  09  5B  00  6C  09  01  00  6C  08  A2  --  09A5C0
57  96  E8  36  FF  2E  00  00  05  C7  96  E6  3E  C5  2E  EC  --  09A5D0
8B  55  57  56  CB  5E  5F  C9  04  C4  83  00  5C  D1  3E  9A  --  09A5E0
```

```
E8 36 FF 2E 06 6A 00 00 05 C7 96 E6 3E C5 2E EC -- 09A5F0
83 00 5C D1 77 9A 0A 76 FF 0C 76 FF 57 96 01 FE -- 09A600
6E 9A 96 EA 36 FF 2E 96 EC 36 FF 2E 50 52 08 C4 -- 09A610
2E EC 8B 55 57 56 CB 5E 5F C9 0A C4 83 00 5C ED -- 09A620
57 96 E8 36 FF 2E 06 6A 00 00 05 C7 96 E6 3E C5 -- 09A630
50 52 08 C4 83 00 5C D1 51 9A 0A 76 FF 0C 76 FF -- 09A640
83 00 5C ED 6E 9A 96 EE 36 FF 2E 96 F0 36 FF 2E -- 09A650
96 E6 3E C5 2E EC 8B 55 57 56 CB 5E 5F C9 0A C4 -- 09A660
FF 0C 76 FF 57 96 E8 36 FF 2E 06 6A 00 00 05 C7 -- 09A670
F4 36 FF 2E 50 52 08 C4 83 00 5C D1 64 9A 0A 76 -- 09A680
5F C9 0A C4 83 00 5C ED 6E 9A 96 F2 36 FF 2E 96 -- 09A690
00 00 05 C7 96 E6 3E C5 2E EC 8B 55 57 56 CB 5E -- 09A6A0
5C D1 FC 9A 0A 76 FF 0C 76 FF 57 96 E8 36 FF 2E -- 09A6B0
3E C5 2E EC 8B 55 57 56 CB 5E 5F C9 08 C4 83 00 -- 09A6C0
5C D2 81 9A 57 96 E8 36 FF 2E 00 00 05 C7 96 E6 -- 09A6D0
3E C5 2E EC 8B 55 57 56 CB 5E 5F C9 04 C4 83 00 -- 09A6E0
FF 14 76 FF 57 96 E8 36 FF 2E 00 00 05 C7 96 E6 -- 09A6F0
35 9A 0A 76 FF 0C 76 FF 0E 76 FF 10 76 FF 12 76 -- 09A700
2E EC 8B 55 57 56 CB 5E 5F C9 10 C4 83 00 5C D2 -- 09A710
76 FF 57 96 E8 36 FF 2E 00 00 05 C7 96 E6 3E C5 -- 09A720
0A 76 FF 0C 76 FF 0E 76 FF 10 76 FF 12 76 FF 14 -- 09A730
8B 55 57 56 CB 5E 5F C9 10 C4 83 00 5C D2 48 9A -- 09A740
E8 36 FF 2E 68 6A 00 00 05 C7 96 E6 3E C5 2E EC -- 09A750
5B 9A 0A 76 FF 0C 76 FF 0E 76 FF 10 76 FF 57 96 -- 09A760
36 FF 2E 96 F8 36 FF 2E 50 52 0C C4 83 00 5C D2 -- 09A770
57 56 CB 5E 5F C9 0A C4 83 00 5C ED 6E 9A 96 F6 -- 09A780
E8 36 FF 2E 00 00 05 C7 96 E6 3E C5 2E EC 8B 55 -- 09A790
08 C4 83 00 5C D2 F3 9A 0A 76 FF 0C 76 FF 57 96 -- 09A7A0
05 C7 96 E6 3E C5 2E EC 8B 55 57 56 CB 5E 5F C9 -- 09A7B0
76 FF 0C 76 FF 0E 76 FF 57 96 E8 36 FF 2E 00 00 -- 09A7C0
55 57 56 CB 5E 5F C9 0A C4 83 00 5C D3 52 9A 0A -- 09A7D0
36 FF 2E 08 6A 00 00 05 C7 96 E6 3E C5 2E EC 8B -- 09A7E0
FF 0C 76 FF 0E 76 FF 10 76 FF 12 76 FF 57 96 E8 -- 09A7F0
FF 2E 50 52 0E C4 83 00 5C D2 22 9A 0A 76 01 FE -- 09A800
0A C4 83 00 5C ED 6E 9A 96 FA 36 FF 2E 96 FC 36 -- 09A810
05 C7 96 E6 3E C5 2E EC 8B 55 57 56 CB 5E 5F C9 -- 09A820
10 76 FF 12 76 FF 57 96 E8 36 FF 2E 06 6A 00 00 -- 09A830

C4 83 00 5C D2 0F 9A 0A 76 FF 0C 76 FF 0E 76 FF -- 09A840
ED 6E 9A 96 FE 36 FF 2E 97 00 36 FF 2E 50 52 0E -- 09A850
C5 2E EC 8B 55 57 56 CB 5E 5F C9 0A C4 83 00 5C -- 09A860
D2 6E 9A 57 96 E8 36 FF 2E 00 00 05 C7 96 E6 3E -- 09A870
C5 2E EC 8B 55 57 56 CB 5E 5F C9 04 C4 83 00 5C -- 09A880
0C 76 FF 57 96 E8 36 FF 2E 00 00 05 C7 96 E6 3E -- 09A890
56 CB 5E 5F C9 08 C4 83 00 5C D2 94 9A 0A 76 FF -- 09A8A0
36 FF 2E 00 00 05 C7 96 E6 3E C5 2E EC 8B 55 57 -- 09A8B0
FF 0C 76 FF 0E 76 FF 10 76 FF 12 76 FF 57 96 E8 -- 09A8C0
57 56 CB 5E 5F C9 0E C4 83 00 5C D2 A7 9A 0A 76 -- 09A8D0
E8 36 FF 2E 00 00 05 C7 96 E6 3E C5 2E EC 8B 55 -- 09A8E0
BA 9A 0A 76 FF 0C 76 FF 0E 76 FF 10 76 FF 57 96 -- 09A8F0
2E EC 8B 55 57 56 CB 5E 5F C9 0C C4 83 00 5C D2 -- 09A900
76 FF 57 96 E8 36 FF 2E 00 00 05 C7 96 E6 3E C5 -- 09A910
83 00 5C D2 CD 9A 0A 76 FF 0C 76 FF 0E 76 FF 10 -- 09A920
96 E6 3E C5 2E EC 8B 55 57 56 CB 5E 5F C9 0C C4 -- 09A930
0C 76 FF 0E 76 FF 57 96 E8 36 FF 2E 00 00 05 C7 -- 09A940
56 CB 5E 5F C9 0A C4 83 00 5C D2 E0 9A 0A 76 FF -- 09A950
2E 12 6A 00 00 05 C7 96 E6 3E C5 2E EC 8B 55 57 -- 09A960
76 FF 10 76 FF 12 76 FF 14 76 FF 57 96 E8 36 FF -- 09A970
52 10 C4 83 00 5C D1 8A 9A 0A 76 FF 0C 76 FF 0E -- 09A980
00 5C ED 6E 9A 97 02 36 FF 2E 97 04 36 FF 2E 50 -- 09A990
```

```
E6 3E C5 2E EC 8B 55 57 56 CB 5E 5F C9 0A C4 83 -- 09A9A0
14 76 FF 57 96 E8 36 FF 2E 12 6A 00 00 05 C7 96 -- 09A9B0
9A 0A 76 FF 0C 76 FF 0E 76 FF 10 76 FF 12 76 FF -- 09A9C0
FF 2E 97 08 36 FF 2E 50 52 10 C4 83 00 5C D1 9D -- 09A9D0
56 CB 5E 5F C9 0A C4 83 00 5C ED 6E 9A 97 06 36 -- 09A9E0
2E 12 6A 00 00 05 C7 96 E6 3E C5 2E EC 8B 55 57 -- 09A9F0
10 76 FF 12 76 FF 14 76 FF 57 96 E8 36 FF 01 FE -- 09AA00
C4 83 00 5C D1 B0 9A 0A 76 FF 0C 76 FF 0E 76 FF -- 09AA10
ED 6E 9A 97 0A 36 FF 2E 97 0C 36 FF 2E 50 52 10 -- 09AA20
C5 2E EC 8B 55 57 56 CB 5E 5F C9 0A C4 83 00 5C -- 09AA30
FF 57 96 E8 36 FF 2E 12 6A 00 00 05 C7 96 E6 3E -- 09AA40
76 FF 0C 76 FF 0E 76 FF 10 76 FF 12 76 FF 14 76 -- 09AA50
97 10 36 FF 2E 50 52 10 C4 83 00 5C D1 C3 9A 0A -- 09AA60
5E 5F C9 0A C4 83 00 5C ED 6E 9A 97 0E 36 FF 2E -- 09AA70
2E 00 00 05 C7 96 E6 3E C5 2E EC 8B 55 57 56 CB -- 09AA80
00 5C D1 D6 9A 0A 76 FF 0C 76 FF 57 96 E8 36 FF -- 09AA90
E6 3E C5 2E EC 8B 55 57 56 CB 5E 5F C9 08 C4 83 -- 09AAA0
76 FF 12 76 FF 57 96 E8 36 FF 2E 00 00 05 C7 96 -- 09AAB0
83 00 5C D1 E9 9A 0A 76 FF 0C 76 FF 0E 76 FF 10 -- 09AAC0
96 E6 3E C5 2E EC 8B 55 57 56 CB 5E 5F C9 0E C4 -- 09AAD0
FF 12 76 FF 57 96 E8 36 FF 2E 12 6A 00 00 05 C7 -- 09AAE0
00 5C D3 19 9A 0A 76 FF 0C 76 FF 0E 76 FF 10 76 -- 09AAF0
9A 97 12 36 FF 2E 97 14 36 FF 2E 50 52 0E C4 83 -- 09AB00
EC 8B 55 57 56 CB 5E 5F C9 0A C4 83 00 5C ED 6E -- 09AB10
96 E8 36 FF 2E 12 6A 00 00 05 C7 96 E6 3E C5 2E -- 09AB20
0A 76 FF 0C 76 FF 0E 76 FF 10 76 FF 12 76 FF 57 -- 09AB30
2E 97 18 36 FF 2E 50 52 0E C4 83 00 5C D3 2C 9A -- 09AB40
CB 5E 5F C9 0A C4 83 00 5C ED 6E 9A 97 16 36 FF -- 09AB50
FF 2E 00 00 05 C7 96 E6 3E C5 2E EC 8B 55 57 56 -- 09AB60
83 00 5C D3 3F 9A 0A 76 FF 0C 76 FF 57 96 E8 36 -- 09AB70
96 E6 3E C5 2E EC 8B 55 57 56 CB 5E 5F C9 08 C4 -- 09AB80
57 96 E8 36 FF 2E 0A 76 FF 0C 76 FF 00 00 05 C7 -- 09AB90
8B 55 57 56 CB 5E 5F C9 08 C4 83 00 5C D4 49 9A -- 09ABA0
8B 97 1A 3E C5 2E 00 00 05 C7 96 E6 3E C5 2E EC -- 09ABB0
C7 96 E6 3E C5 2E EC 8B 55 57 56 CB 5E 5F C9 05 -- 09ABC0
FF 10 76 FF 12 76 FF 57 96 E8 36 FF 2E 00 00 05 -- 09ABD0

0E C4 83 00 5C D4 5C 9A 0A 76 FF 0C 76 FF 0E 76 -- 09ABE0
05 C7 96 E6 3E C5 2E EC 8B 55 57 56 CB 5E 5F C9 -- 09ABF0
0E 76 FF 10 76 FF 57 96 E8 36 FF 2E 00 00 01 FE -- 09AC00
5F C9 0C C4 83 00 5C D5 D8 9A 0A 76 FF 0C 76 FF -- 09AC10
00 00 05 C7 96 E6 3E C5 2E EC 8B 55 57 56 CB 5E -- 09AC20
5C D5 EB 9A 0A 76 FF 0C 76 FF 57 96 E8 36 FF 2E -- 09AC30
3E C5 2E EC 8B 55 57 56 CB 5E 5F C9 08 C4 83 00 -- 09AC40
FF 0C 76 FF 57 96 E8 36 FF 2E 00 00 05 C7 96 E6 -- 09AC50
57 56 CB 5E 5F C9 08 C4 83 00 5C D5 FE 9A 0A 76 -- 09AC60
E8 36 FF 2E 00 00 05 C7 96 E6 3E C5 2E EC 8B 55 -- 09AC70
08 C4 83 00 5C D6 11 9A 0A 76 FF 0C 76 FF 57 96 -- 09AC80
00 6C 23 F2 00 6C 23 EC 00 6C 23 E2 CB 5E 5F C9 -- 09AC90
00 6C 24 6E 00 6C 24 66 00 6C 23 FE 00 6C 23 F8 -- 09ACA0
00 6C 24 AA 00 6C 24 98 00 6C 24 86 00 6C 24 74 -- 09ACB0
8B 55 57 56 00 6C 23 EA 00 6C 24 CE 00 6C 24 BC -- 09ACC0
9C D0 06 8B 2E 9C D2 36 FF 2E 50 0A 46 8D 16 EC -- 09ACD0
CB 5E 5F C9 08 C4 83 00 5C 97 A2 9A 50 00 12 05 -- 09ACE0
0A 76 FF 0C 76 FF 50 0E 46 8D 16 EC 8B 55 57 56 -- 09ACF0
12 C8 57 56 CB 5E 5F C9 08 C4 83 00 5C 97 A2 9A -- 09AD00
F4 46 89 0C 56 8B 0A 46 8B 00 09 EE 46 C7 00 00 -- 09AD10
C7 FA 56 89 F8 46 89 0C 56 8B 0A 46 8B F6 56 89 -- 09AD20
A2 9A 50 EE 46 8D 16 50 0E 46 8D 16 7D 00 F0 46 -- 09AD30
CB 5E 5F C9 00 05 C6 F4 7E C5 08 C4 83 00 5C 97 -- 09AD40
```

```
89 F8 46 89 10 56 8B 0E 46 8B 00 00 64 C8 57 56 -- 09AD50
E2 56 89 E0 46 89 02 55 8B 05 8B F8 7E C5 FA 56 -- 09AD60
F0 8B E4 2A 05 8A E0 46 FF E0 7E C5 04 F8 46 83 -- 09AD70
FF 0C 76 FF 03 D8 E9 03 75 F6 0B 18 74 00 25 3D -- 09AD80
EC 46 C7 D7 EB 06 C4 83 00 64 31 A4 9A 56 0A 76 -- 09AD90
FF E0 7E C5 FF FF EA 46 C7 FF FF E8 46 C7 00 20 -- 09ADA0
EE 46 C7 13 75 2D FE 83 F0 8B E4 2A 05 8A E0 46 -- 09ADB0
05 EB F0 8B E4 2A 05 8A E0 46 FF E0 7E 8B 00 01 -- 09ADC0
C5 00 30 EC 46 C7 11 75 30 FE 83 00 00 EE 46 C7 -- 09ADD0
28 75 2A FE 83 F0 8B E4 2A 05 8A E0 46 FF E0 7E -- 09ADE0
0A 7D C0 0B E8 46 89 05 8B 02 F8 46 83 F8 7E C5 -- 09ADF0
FF E0 7E C5 E8 46 89 D8 F7 00 01 EE 46 C7 01 FE -- 09AE00
83 00 00 E8 46 C7 2D EB F0 8B E4 2A 05 8A E0 46 -- 09AE10
8B F8 8B 0A E8 46 6B 1E 7F 39 FE 83 23 7C 30 FE -- 09AE20
8A E0 46 FF E0 7E C5 E8 46 89 00 30 2D C7 03 C6 -- 09AE30
FF E0 7E C5 58 75 2E FE 83 D8 EB F0 8B E4 2A 05 -- 09AE40
F8 7E C5 1A 75 2A FE 83 F0 8B E4 2A 05 8A E0 46 -- 09AE50
8A E0 46 FF E0 7E C5 EA 46 89 05 8B 02 F8 46 83 -- 09AE60
7C 30 FE 83 00 00 EA 46 C7 2D EB F0 8B E4 2A 05 -- 09AE70
C7 03 C6 8B F8 8B 0A EA 46 6B 1E 7F 39 FE 83 23 -- 09AE80
E4 2A 05 8A E0 46 FF E0 7E C5 EA 46 89 00 30 2D -- 09AE90
8A E0 46 FF E0 7E C5 27 75 6C FE 83 D8 EB F0 8B -- 09AEA0
83 0A 74 6F FE 83 0F 74 64 FE 83 F0 8B E4 2A 05 -- 09AEB0
F0 8B FF DF 25 C6 8B 07 75 78 FE 83 05 74 75 FE -- 09AEC0
56 89 FC 46 89 F2 56 89 F0 46 89 5A 16 9C 46 8D -- 09AED0
43 43 00 0E B9 99 4C BB C6 8B 00 01 E4 46 C7 FE -- 09AEE0
00 44 1C 67 FF 2E FE 94 E9 03 74 F9 E0 07 3B 2E -- 09AEF0
00 67 00 66 00 65 00 64 00 63 00 58 00 55 00 4F -- 09AF00
9A 1D 9A 42 99 D7 00 78 00 75 00 73 00 72 00 6F -- 09AF10
9A F1 99 CF 9A 4A 9A 4A 9A 4A 99 86 9A D9 9A 46 -- 09AF20
89 05 8B 02 F8 46 83 F8 7E C5 99 D3 99 C2 9A 83 -- 09AF30
FC 7E C5 DC 46 89 D8 F7 0E 7D 00 DC 7E 83 DC 46 -- 09AF40
76 FF FE 76 FF DC 76 FF 0A 6A 2D 05 C6 FC 46 FF -- 09AF50
E9 FE 56 89 FC 46 89 08 C4 83 00 5C 9B BA 9A FC -- 09AF60
6A DC EB 35 FF 02 F8 46 83 F8 7E C5 0A 6A 01 48 -- 09AF70

89 02 55 8B 05 8B F8 7E C5 ED EB 10 6A F1 EB 08 -- 09AF80
F7 16 79 00 DE 7E 83 04 F8 46 83 DE 56 89 DC 46 -- 09AF90
FF FC 7E C5 DE 56 89 DC 46 89 00 DA 83 D8 F7 DA -- 09AFA0
FE 76 FF DC 76 FF DE 76 FF 0A 6A 2D 05 C6 FC 46 -- 09AFB0
C5 0A 6A 9C EB 0A C4 83 00 5C 9C 30 9A FC 76 FF -- 09AFC0
9C 30 9A FC 76 FF FE 76 FF 35 FF 02 75 FF F8 7E -- 09AFD0
E9 04 F8 46 83 FE 56 89 FC 46 89 0A C4 83 00 5C -- 09AFE0
FC 76 FF FE 76 FF D5 EB 10 6A D9 EB 08 6A 00 C8 -- 09AFF0
F8 76 FF FA 76 FF 08 6A 08 EC 83 EA 76 FF 01 FE -- 09B000
56 0A C4 83 00 5C ED 6E 9A 50 00 08 05 C4 8B 16 -- 09B010
46 83 FE 56 89 FC 46 89 10 C4 83 00 5C D6 24 9A -- 09B020
8B 05 8B F8 7E C5 00 00 E4 46 C7 00 87 E9 08 F8 -- 09B030
D4 F4 46 C7 08 75 C2 0B F6 56 89 F4 46 89 02 55 -- 09B040
46 89 F6 56 8B F4 46 8B 04 F8 46 83 F6 4E 8C 9C -- 09B050
FC 46 FF FC 7E C5 FE 56 89 FC 46 89 F2 56 89 F0 -- 09B060
46 2B FC 46 8B EF 7C 00 EA 7E 83 11 74 00 3D 80 -- 09B070
00 00 E4 46 C7 31 EB FC 4E FF E4 7E EA 46 3B F4 -- 09B080
88 FC 46 FF FC 7E C5 05 8B 02 F8 46 83 F8 7E C5 -- 09B090
76 FF 0C 76 FF 35 FF 02 75 FF F8 7E C5 19 EB 05 -- 09B0A0
8B F0 46 8B FF 31 E9 08 C4 83 00 5C 97 A2 9A 0A -- 09B0B0
C7 05 7D C0 0B E6 46 89 FC 46 2B E8 46 03 F2 56 -- 09B0C0
24 74 00 E4 7E 83 3F 75 00 EE 7E 83 00 00 E6 46 -- 09B0D0
76 FF 16 75 2D 3D 80 F0 7E C5 1E 75 30 EC 7E 83 -- 09B0E0
64 31 A4 9A 50 E4 2A 05 8A F0 46 FF 0A 76 FF 0C -- 09B0F0
```

682

```
76 FF 0B 74 C0 0B E6 4E FF E6 46 8B 06 C4 83 00 -- 09B100
3B F2 56 8B F0 46 8B E3 EB EC 76 FF 0A 76 FF 0C -- 09B110
F0 46 FF F0 7E C5 0A 76 FF 0C 76 FF 1B 73 FC 46 -- 09B120
83 DA EB 06 C4 83 00 64 31 A4 9A 50 E4 2A 05 8A -- 09B130
C0 0B E6 4E FF E6 46 8B FC 30 E9 03 75 00 EE 7E -- 09B140
A4 9A EC 76 FF 0A 76 FF 0C 76 FF FC 23 E9 03 75 -- 09B150
0E C8 57 56 CB 5E 5F C9 E0 EB 06 C4 83 00 64 31 -- 09B160
FE 56 89 FC 46 89 5A 16 FC 46 8D 0E 76 8B 00 00 -- 09B170
10 76 F7 D2 2B C6 8B 00 07 C6 FC 5E C5 FC 4E FF -- 09B180
2E DA 8B 10 76 F7 D2 2B C6 8B 1B 74 C0 0B F8 8B -- 09B190
EB F7 8B 07 88 FC 5E C5 FC 4E FF 98 9C DC 87 8A -- 09B1A0
88 FC 5E C5 FC 4E FF 98 9C DC 87 8A 2E DE 8B D8 -- 09B1B0
E4 2A 07 8A FC 46 FF 0F 74 00 3F 80 FC 5E C5 07 -- 09B1C0
5F C9 0C 56 8B 0A 46 8B E7 EB 0A 46 FF 0A 5E C5 -- 09B1D0
5A 16 FF 46 8D 12 76 8B 00 00 16 C8 57 56 CB 5E -- 09B1E0
8B 00 05 C6 EA 7E C5 EA 4E FF EC 56 89 EA 46 89 -- 09B1F0
5C EF 84 9A 0E 76 FF 10 76 FF 50 52 99 C6 01 FE -- 09B200
C6 8B 31 74 C2 0B F0 56 89 EE 46 89 08 C4 83 00 -- 09B210
C4 83 00 5C EF D0 9A 0E 76 FF 10 76 FF 50 52 99 -- 09B220
88 EA 7E C5 EA 4E FF 98 9C DC 85 8A 2E F8 8B 08 -- 09B230
8B B2 EB 10 56 89 0E 46 89 F0 56 8B EE 46 8B 05 -- 09B240
EA 7E C5 EA 4E FF 98 9C DC 85 8A 2E F8 8B 0E 46 -- 09B250
2A 05 8A EA 46 FF 0F 74 00 3D 80 EA 7E C5 05 88 -- 09B260
C9 0C 56 8B 0A 46 8B E7 EB 0A 46 FF 0A 7E C5 E4 -- 09B270
00 00 7D 4C 4C 55 4E 7B 00 24 FE 8E 00 CB 5E 5F -- 09B280
46 45 44 43 42 41 39 38 37 36 35 34 33 32 31 30 -- 09B290
00 10 FC 46 C7 00 00 FE 46 C7 00 00 20 C8 57 56 -- 09B2A0
C5 2E 00 3C 05 C7 A2 24 3E C5 2E 00 00 EA 46 C7 -- 09B2B0
46 89 05 8B A2 24 3E C5 2E 00 14 05 C7 A2 28 3E -- 09B2C0
00 01 F2 46 C7 F0 46 89 05 8B A2 28 3E C5 2E EE -- 09B2D0
16 E0 46 8D 03 F6 46 C6 01 F5 46 C6 03 F4 46 C6 -- 09B2E0
9E DD 9A F7 76 FF F9 76 FF F9 56 89 F7 46 89 5A -- 09B2F0
2E 50 EE 46 8D 16 50 FE 46 8D 16 04 C4 83 00 5C -- 09B300
2C 3E C5 2E FC 76 FF A2 30 36 FF 2E A2 32 36 FF -- 09B310

83 14 C4 83 00 64 3D BA 9A 08 6A 06 6A 35 FF A2 -- 09B320
FE 76 FF 00 6A 00 6A 00 6A 00 6A 16 74 00 FE 7E -- 09B330
00 00 EC 46 C7 00 F1 E9 0A C4 83 00 64 28 52 9A -- 09B340
75 00 FE 7E 83 3B 7D 0A EC 7E 83 EC 46 FF 03 EB -- 09B350
A2 34 06 03 2E E0 D1 EC 46 8B 50 FE 46 8D 16 35 -- 09B360
FF A2 30 3E C5 2E EA 76 FF 50 52 A2 36 16 8B 2E -- 09B370
64 3D BA 9A 02 6A 05 6A 35 FF A2 2C 3E C5 2E 35 -- 09B380
00 6A 00 6A 16 74 00 FE 7E 83 BC EB 12 C4 83 00 -- 09B390
E9 0A C4 83 00 64 28 52 9A FE 76 FF 00 6A 00 6A -- 09B3A0
50 FE 46 8D 16 00 01 05 C7 A2 38 3E C5 2E 00 8A -- 09B3B0
00 6A 15 74 00 FE 7E 83 04 C4 83 00 5C 9F 18 9A -- 09B3C0
C4 83 00 64 28 52 9A FE 76 FF 00 6A 00 6A 00 6A -- 09B3D0
A2 40 3E C5 2E 00 05 C6 A2 3C 3E C5 2E 59 EB 0A -- 09B3E0
A2 48 3E C5 2E 00 05 C6 A2 44 3E C5 2E 00 05 C6 -- 09B3F0
3E C5 2E 00 05 C6 A2 4C 3E C5 2E 00 05 C6 01 FE -- 09B400
3E C5 2E 00 05 C6 A2 54 3E C5 2E 00 05 C6 A2 50 -- 09B410
3E C5 2E 00 05 C6 A2 5C 3E C5 2E 00 05 C6 A2 58 -- 09B420
5F C9 00 00 05 C7 A2 64 3E C5 2E 01 05 C6 A2 60 -- 09B430
3E C5 2E 00 00 FE 46 C7 00 00 02 C8 57 56 CB 5E -- 09B440
30 3E C5 2E 50 FE 46 8D 16 38 74 00 3D 83 A2 38 -- 09B450
BA 9A 16 6A 02 6A 35 FF A2 2C 3E C5 2E 35 FF A2 -- 09B460
00 6A 00 6A 13 74 00 FE 7E 83 0C C4 83 00 64 3D -- 09B470
C9 0A C4 83 00 64 28 52 9A FE 76 FF 00 6A 00 6A -- 09B480
7E C5 00 05 C6 0A 7E C5 EC 8B 55 57 56 CB 5E 5F -- 09B490
7E C5 48 05 8B A2 24 3E C5 2E 00 00 01 45 C7 0A -- 09B4A0
```

```
28 3E C5 2E 00 00 05 45 C7 0A 7E C5 03 45 89 0A -- 09B4B0
57 56 CB 5E 5F C9 07 45 89 0A 7E C5 48 05 8B A2 -- 09B4C0
F7 46 C6 00 03 F1 46 C7 70 EE 46 C6 00 00 12 C8 -- 09B4D0
F6 46 C6 01 F5 46 C6 02 F3 46 C6 01 F4 46 C6 01 -- 09B4E0
EB 00 00 FE 46 C7 00 15 EF 46 C7 03 F8 46 C6 04 -- 09B4F0
06 74 04 FE 7E 83 67 7D 0A FE 7E 83 FE 46 FF 03 -- 09B500
A2 6A 16 8B 2E A2 68 06 8B 2E 12 75 09 FE 7E 83 -- 09B510
16 8B 2E A2 6C 06 8B 2E 10 EB FB 56 89 F9 46 89 -- 09B520
8D 16 0A 76 FF 0C 76 FF FB 56 89 F9 46 89 A2 6E -- 09B530
2E A2 34 3E 03 2E E7 D1 FE 7E 8B 00 6A 50 EE 46 -- 09B540
6A 05 6A 35 FF A2 2C 3E C5 2E 35 FF A2 36 1E 8E -- 09B550
74 00 3D 83 0A 7E C5 12 C4 83 00 64 3D BA 9A 03 -- 09B560
00 00 FE 46 C7 00 00 18 C8 57 56 CB 5E 5F C9 90 -- 09B570
00 3D 83 A2 64 3E C5 2E 00 FB 46 C6 00 FD 46 C6 -- 09B580
EB 00 00 F6 46 C7 00 00 F4 46 C7 00 A9 E9 03 74 -- 09B590
3E C5 2E 00 88 E9 03 7C 02 F6 7E 83 F6 46 FF 03 -- 09B5A0
3E C5 2E 0C 75 00 F6 7E 83 E8 46 89 05 8B A2 70 -- 09B5B0
05 8B A2 74 3E C5 2E 0D EB EA 46 89 05 8B A2 74 -- 09B5C0
F8 46 FF 06 EB 00 00 F8 46 C7 EA 46 89 00 50 05 -- 09B5D0
16 B2 75 00 FE 7E 83 B8 7D 05 F8 7E 83 F4 46 FF -- 09B5E0
8A 50 E4 2A FB 46 8A 50 E8 46 8D 16 50 FE 46 8D -- 09B5F0
34 3E 03 2E E7 D1 F4 7E 8B 50 E4 2A FD 46 01 FE -- 09B600
6A 35 FF A2 2C 3E C5 2E 35 FF A2 36 1E 8E 2E A2 -- 09B610
A2 24 3E C5 2E 14 C4 83 00 64 3D BA 9A 06 6A 06 -- 09B620
00 01 05 C7 A2 64 3E C5 2E A8 EB E8 46 01 05 8B -- 09B630
2E 00 00 FE 46 C7 00 00 02 C8 57 56 CB 5E 5F C9 -- 09B640
5C A1 98 9A 0C 76 FF A2 78 36 FF 2E A2 7A 36 FF -- 09B650
C5 2E A2 7A 16 8B 2E A2 78 06 8B 2E 06 C4 83 00 -- 09B660
36 FF 2E 50 FE 46 8D 16 02 55 89 05 89 A2 7C 3E -- 09B670
3C 36 FF 2E A2 3E 36 FF 2E A2 80 36 FF 2E A2 82 -- 09B680
1E 8E 2E A2 34 3E 03 2E E7 D1 0A 7E 8B 00 6A A2 -- 09B690
9A 04 6A 07 6A 35 FF A2 2C 3E C5 2E 35 FF A2 36 -- 09B6A0
6A 00 6A 13 74 00 FE 7E 83 16 C4 83 00 64 3D BA -- 09B6B0

0A C4 83 00 64 28 52 9A FE 76 FF 01 6A 00 6A 00 -- 09B6C0
2E 00 00 FE 46 C7 00 00 04 C8 57 56 CB 5E 5F C9 -- 09B6D0
03 EB 00 00 FC 46 C7 63 74 00 3D 83 A2 64 3E C5 -- 09B6E0
16 2B 75 00 FE 7E 83 31 7D 0A FC 7E 83 FC 46 FF -- 09B6F0
8E 2E A2 34 3E 03 2E E7 D1 FC 7E 8B 50 FE 46 8D -- 09B700
07 6A 02 6A 35 FF A2 2C 3E C5 2E 35 FF A2 36 1E -- 09B710
13 74 00 FE 7E 83 C6 EB 0C C4 83 00 64 3D BA 9A -- 09B720
00 64 28 52 9A FE 76 FF 00 6A 00 6A 00 6A 00 6A -- 09B730
CB 5E 5F C9 00 00 05 C7 A2 64 3E C5 2E 0A C4 83 -- 09B740
00 00 FE 46 C7 00 00 F8 46 C7 00 00 08 C8 57 56 -- 09B750
7E 03 FE 7E 8B 0E 7D 04 FE 7E 83 FE 46 FF 03 EB -- 09B760
46 C7 00 00 FE 46 C7 E9 EB 20 05 C6 0E 5E 8E 0C -- 09B770
84 3E F7 2E 99 FC 46 8B FE 46 FF 0F EB 00 64 FC -- 09B780
7E F7 99 0A 46 8B 3D 7D 03 FE 7E 83 FC 46 89 A2 -- 09B790
06 74 01 F8 7E 83 0C 7F 00 FA 7E 83 FA 46 89 FC -- 09B7A0
6E F7 FC 46 8B 00 01 F8 46 C7 CF 75 02 FE 7E 83 -- 09B7B0
FA 46 8B 0E 5E 8E 0C 7E 03 FE 7E 8B 0A 46 29 FA -- 09B7C0
00 6C 30 AA 00 CB 5E 5F C9 AE EB 05 88 00 30 05 -- 09B7D0
00 6C 30 B0 00 6C 30 AE 00 3C F5 A4 00 6C 30 AC -- 09B7E0
00 6C 30 C6 00 6C 30 C5 00 6C 30 C4 00 6C 30 A8 -- 09B7F0
30 CA 00 6C 30 C9 00 6C 30 C8 00 6C 30 C7 01 FE -- 09B800
30 A6 00 6C 30 CD 00 6C 30 CC 00 6C 30 CB 00 6C -- 09B810
30 A0 00 6C 30 9E 00 6C 30 9A 00 6C 30 96 00 6C -- 09B820
00 0A 00 6C 30 CE 00 6C 30 D9 00 6C 30 A2 00 6C -- 09B830
46 C6 46 E9 46 C6 0A E8 46 C6 00 00 28 C8 57 56 -- 09B840
46 C6 49 ED 46 C6 5F EC 46 C6 53 EB 46 C6 4D EA -- 09B850
```

```
46 C6 42 F1 46 C6 4D F0 46 C6 5F EF 46 C6 46 EE -- 09B860
50 FA 46 8D 16 03 6A 57 56 00 00 E0 46 C7 58 F2 -- 09B870
06 74 00 FA 7E 83 F6 46 89 5E 5F 00 5C C0 7A 9A -- 09B880
50 E8 46 8D 16 F6 76 FF 57 56 01 61 E9 FA 46 8B -- 09B890
46 89 5E 5F 00 5C C0 BA 9A 50 FA 46 8D 16 00 6A -- 09B8A0
50 FA 46 8D 16 4E 6A 57 56 D9 75 00 FA 7E 83 F4 -- 09B8B0
C0 75 00 FA 7E 83 E4 46 89 5E 5F 00 5C BF B8 9A -- 09B8C0
C5 FE 56 89 FC 46 89 02 C4 83 00 64 5D 04 9A 50 -- 09B8D0
50 00 14 05 52 0A 76 FF 0C 76 FF 00 05 C6 FC 7E -- 09B8E0
45 88 FC 7E C5 0E 46 8B 08 C4 83 00 64 5B B4 9A -- 09B8F0
14 46 8B 0D 45 88 12 46 8B 0C 45 88 10 46 8B 0B -- 09B900
C7 12 45 89 18 46 8B 10 55 89 0E 45 89 16 56 8B -- 09B910
57 56 00 00 4A 45 C7 00 00 48 45 C7 00 00 46 45 -- 09B920
89 5E 5F 00 5C BF 98 9A 50 FA 46 8D 16 E0 76 FF -- 09B930
F4 76 FF 57 56 FF 45 E9 03 74 00 FA 7E 83 E2 46 -- 09B940
5E 5F 00 5C C0 9A 9A 50 FA 46 8D 16 50 E4 76 FF -- 09B950
FF 6A E2 76 FF 57 56 FF 27 E9 03 74 00 FA 7E 83 -- 09B960
5F 00 5C C0 DA 9A 50 FA 46 8D 16 50 D8 46 8D 16 -- 09B970
FF 57 56 FF 03 E9 03 74 00 FA 7E 83 DE 46 89 5E -- 09B980
7E 83 5E 5F 00 5C BF D8 9A 50 FA 46 8D 16 E4 76 -- 09B990
FA 46 8D 16 E2 76 FF 57 56 FE E9 E9 03 74 00 FA -- 09B9A0
CF E9 03 74 00 FA 7E 83 5E 5F 00 5C BF 78 9A 50 -- 09B9B0
89 DA 46 89 02 C4 83 00 64 5D 04 9A DE 76 FF FE -- 09B9C0
16 DE 76 FF 57 56 F8 46 89 05 8B DA 7E C5 DC 56 -- 09B9D0
74 00 FA 7E 83 5E 5F 00 5C BF D8 9A 50 FA 46 8D -- 09B9E0
00 28 C8 57 56 CB 5E 5F C9 F8 46 8B FE 9C E9 03 -- 09B9F0
C6 4D EA 46 C6 46 E9 46 C6 0A E8 46 C6 00 01 FE -- 09BA00
C6 46 EE 46 C6 49 ED 46 C6 5F EC 46 C6 53 EB 46 -- 09BA10
C7 58 F2 46 C6 42 F1 46 C6 4D F0 46 C6 5F EF 46 -- 09BA20
C0 7A 9A 50 FA 46 8D 16 03 6A 57 56 00 00 E0 46 -- 09BA30
FA 46 8B 06 74 00 FA 7E 83 F6 46 89 5E 5F 00 5C -- 09BA40
16 00 6A 50 E8 46 8D 16 F6 76 FF 57 56 01 64 E9 -- 09BA50

7E 83 F4 46 89 5E 5F 00 5C C0 BA 9A 50 FA 46 8D -- 09BA60
BF B8 9A 50 FA 46 8D 16 4E 6A 57 56 D9 75 00 FA -- 09BA70
04 9A 50 C0 75 00 FA 7E 83 E4 46 89 5E 5F 00 5C -- 09BA80
C6 FC 7E C5 FE 56 89 FC 46 89 02 C4 83 00 64 5D -- 09BA90
5B B4 9A 50 00 14 05 52 0A 76 FF 0C 76 FF 00 05 -- 09BAA0
46 8B 0B 45 88 FC 7E C5 0E 46 8B 08 C4 83 00 64 -- 09BAB0
16 56 8B 14 46 8B 0D 45 88 12 46 8B 0C 45 88 10 -- 09BAC0
8B 1A 46 8B 12 45 89 18 46 8B 10 55 89 0E 45 89 -- 09BAD0
57 56 4A 45 89 1E 46 8B 48 55 89 46 45 89 1C 56 -- 09BAE0
89 5E 5F 00 5C BF 98 9A 50 FA 46 8D 16 E0 76 FF -- 09BAF0
F4 76 FF 57 56 FF 42 E9 03 74 00 FA 7E 83 E2 46 -- 09BB00
5E 5F 00 5C C0 9A 9A 50 FA 46 8D 16 50 E4 76 FF -- 09BB10
FF 6A E2 76 FF 57 56 FF 24 E9 03 74 00 FA 7E 83 -- 09BB20
5F 00 5C C0 DA 9A 50 FA 46 8D 16 50 D8 46 8D 16 -- 09BB30
FF 57 56 FF 00 E9 03 74 00 FA 7E 83 DE 46 89 5E -- 09BB40
7E 83 5E 5F 00 5C BF D8 9A 50 FA 46 8D 16 E4 76 -- 09BB50
FA 46 8D 16 E2 76 FF 57 56 FE E6 E9 03 74 00 FA -- 09BB60
CC E9 03 74 00 FA 7E 83 5E 5F 00 5C BF 78 9A 50 -- 09BB70
89 DA 46 89 02 C4 83 00 64 5D 04 9A DE 76 FF FE -- 09BB80
16 DE 76 FF 57 56 F8 46 89 05 8B DA 7E C5 DC 56 -- 09BB90
74 00 FA 7E 83 5E 5F 00 5C BF D8 9A 50 FA 46 8D -- 09BBA0
00 02 C8 57 56 CB 5E 5F C9 F8 46 8B FE 99 E9 03 -- 09BBB0
10 76 FF 12 76 FF 14 76 FF 16 76 FF 18 76 FF 00 -- 09BBC0
C4 83 00 5C A2 86 9A 0A 76 FF 0C 76 FF 0E 76 FF -- 09BBD0
03 6A 00 6A 00 6A 00 6A 11 74 C0 0B FE 46 89 10 -- 09BBE0
CB 5E 5F C9 FE 46 8B 0A C4 83 00 64 28 52 9A 50 -- 09BBF0
46 E9 46 C6 0A E8 46 C6 00 00 28 C8 57 56 01 FE -- 09BC00
```

```
49 ED 46 C6 5F EC 46 C6 53 EB 46 C6 4D EA 46 C6 -- 09BC10
42 F1 46 C6 4D F0 46 C6 5F EF 46 C6 46 EE 46 C6 -- 09BC20
46 8D 16 03 6A 57 56 00 00 E0 46 C7 58 F2 46 C6 -- 09BC30
00 FA 7E 83 F6 46 89 5E 5F 00 5C C0 7A 9A 50 FA -- 09BC40
46 8D 16 F6 76 FF 57 56 01 80 E9 FA 46 8B 06 74 -- 09BC50
5E 5F 00 5C C0 BA 9A 50 FA 46 8D 16 00 6A 50 E8 -- 09BC60
8D 16 00 B4 68 57 56 D9 75 00 FA 7E 83 F4 46 89 -- 09BC70
FA 7E 83 E4 46 89 5E 5F 00 5C BF B8 9A 50 FA 46 -- 09BC80
89 FC 46 89 02 C4 83 00 64 5D 04 9A 50 BF 75 00 -- 09BC90
05 52 0A 76 FF 0C 76 FF 01 05 C6 FC 7E C5 FE 56 -- 09BCA0
7E C5 0E 46 8B 08 C4 83 00 64 5B B4 9A 50 00 14 -- 09BCB0
0D 45 88 12 46 8B 0C 45 88 10 46 8B 0B 45 88 FC -- 09BCC0
89 18 46 8B 10 55 89 0E 45 89 16 56 8B 14 46 8B -- 09BCD0
46 8B 48 55 89 46 45 89 1C 56 8B 1A 46 8B 12 45 -- 09BCE0
50 00 4E 05 FC 46 8B FE 76 FF 57 56 4A 45 89 1E -- 09BCF0
56 5E 5F 00 5C FE EC 9A 66 6A 20 76 FF 22 76 FF -- 09BD00
5E 5F 00 5C BF 98 9A 50 FA 46 8D 16 E0 76 FF 57 -- 09BD10
76 FF 57 56 FF 26 E9 03 74 00 FA 7E 83 E2 46 89 -- 09BD20
5F 00 5C C0 9A 9A 50 FA 46 8D 16 50 E4 76 FF F4 -- 09BD30
6A E2 76 FF 57 56 FF 08 E9 03 74 00 FA 7E 83 5E -- 09BD40
00 5C C0 DA 9A 50 FA 46 8D 16 50 D8 46 8D 16 FF -- 09BD50
57 56 FE E4 E9 03 74 00 FA 7E 83 DE 46 89 5E 5F -- 09BD60
83 5E 5F 00 5C BF D8 9A 50 FA 46 8D 16 E4 76 FF -- 09BD70
46 8D 16 E2 76 FF 57 56 FE CA E9 03 74 00 FA 7E -- 09BD80
E9 03 74 00 FA 7E 83 5E 5F 00 5C BF 78 9A 50 FA -- 09BD90
DA 46 89 02 C4 83 00 64 5D 04 9A DE 76 FF FE B0 -- 09BDA0
DE 76 FF 57 56 F8 46 89 05 8B DA 7E C5 DC 56 89 -- 09BDB0
00 FA 7E 83 5E 5F 00 5C BF D8 9A 50 FA 46 8D 16 -- 09BDC0
62 C8 57 56 CB 5E 5F C9 F8 46 8B FE 7D E9 03 74 -- 09BDD0
46 8D 16 50 6A 46 8D 16 0D 6A 02 6A 12 6A 00 01 -- 09BDE0
AA 46 8D 16 50 52 0C C4 83 00 5C 93 FD 9A 50 16 -- 09BDF0

7E C5 B8 46 8B 0A C4 83 00 5C ED 6E 9A 50 01 FE -- 09BE00
8B FF FF BA 46 C7 02 2C E9 03 74 C0 0B 05 89 7E -- 09BE10
50 BC 46 8D 16 12 76 FF 14 76 FF A6 46 89 B4 46 -- 09BE20
46 8B 0C C4 83 00 5C AA 8B 9A 0E 76 FF 10 76 FF -- 09BE30
C8 46 8B 0A 55 89 08 45 89 12 7E C5 C6 56 8B C4 -- 09BE40
89 BE 56 8B BC 46 8B 0E 55 89 0C 45 89 CA 56 8B -- 09BE50
06 55 89 04 45 89 C2 56 8B C0 46 8B 02 55 89 05 -- 09BE60
CA 56 89 C8 46 89 C6 56 89 C4 46 89 D0 8B C0 2B -- 09BE70
46 8D 16 50 FE A2 86 8D 16 7E 76 FF 00 80 B6 FF -- 09BE80
00 3D 83 7E 7E C5 0C C4 83 00 54 F6 E3 9A 50 98 -- 09BE90
AA 86 89 C2 56 8B C0 46 8B 01 9F E9 05 8B 05 74 -- 09BEA0
BC 46 8B FE D4 96 89 FE D2 86 89 FE AC 96 89 FE -- 09BEB0
89 FE D6 86 89 FE B0 96 89 FE AE 86 89 BE 56 8B -- 09BEC0
FE A3 86 8A E0 46 88 E4 2A FE A2 86 8A FE D8 96 -- 09BED0
FE A6 86 8A E2 46 89 FE A4 86 8B E1 46 88 E4 2A -- 09BEE0
86 8A E5 46 88 E4 2A FE A7 86 8A E4 46 88 E4 2A -- 09BEF0
E7 46 88 E4 2A FE A9 86 8A E6 46 88 E4 2A FE A8 -- 09BF00
8B BC 46 8B EA 56 89 E8 46 89 C2 56 8B C0 46 8B -- 09BF10
5E DD 9B FE B2 86 DD 9B EE 56 89 EC 46 89 BE 56 -- 09BF20
76 FF 00 80 B6 FF F8 5E DD 9B FE BA 86 DD 9B F0 -- 09BF30
54 F8 25 9A 0A 76 FF 0C 76 FF 50 E0 46 8D 16 7E -- 09BF40
68 FF 43 E9 03 74 00 3D 83 7E 7E C5 0C C4 83 00 -- 09BF50
96 89 FE 9E 86 89 02 C4 83 00 64 4E 56 9A 20 00 -- 09BF60
00 80 B6 FF 00 CA E9 00 02 B8 06 75 C2 0B FE A0 -- 09BF70
50 98 46 8D 16 FE 9E B6 FF FE A0 B6 FF 7E 76 FF -- 09BF80
03 74 00 3D 83 7E 7E C5 0C C4 83 00 54 FB B8 9A -- 09BF90
FE 9E B6 FF FE A0 B6 FF 57 00 80 B6 FF FE FF E9 -- 09BFA0
7E C5 0C C4 83 00 54 FB 13 9A 0A 76 FF 0C 76 FF -- 09BFB0
```

686

```
90 46 89 DO 8B CO 2B FE D9 E9 03 74 00 3D 83 7E -- 09BFCO
2D BE 56 8B BC 46 8B 8A 56 89 88 46 89 92 56 89 -- 09BFDO
56 8B CO 46 8B 8E 56 89 8C 46 89 00 DA 83 00 01 -- 09BFEO
80 B6 FF 96 56 89 94 46 89 00 DA 83 00 01 2D C2 -- 09BFFO
FF 10 76 FF 50 88 46 8D 16 7C 76 FF 57 00 01 FE -- 09C000
OC 76 FF 50 FE A2 86 8D 16 50 BC 46 8D 16 OE 76 -- 09C010
FF FE AO B6 FF 1A C4 83 00 5C 2B C4 9A 0A 76 FF -- 09C020
50 AA 46 8D 16 04 C4 83 00 64 4E E3 9A FE 9E B6 -- 09C030
C8 57 56 CB 5E 5F C9 9B 04 C4 83 00 5C 94 D5 9A -- 09C040
CA 46 89 5A 16 CE 46 8D FF FF C8 46 C7 00 00 5C -- 09C050
76 FF 10 76 FF 12 76 FF 14 76 FF 24 6A CC 56 89 -- 09C060
7E C5 05 8B 0A 7E C5 0A C4 83 00 5C ED 6E 9A OE -- 09C070
16 45 89 OE 7E C5 04 45 8B 0A 7E C5 14 45 89 OE -- 09C080
OE 7E C5 40 04 2B 26 02 45 8B 0A 7E C5 0A 76 C4 -- 09C090
7E C5 40 04 44 2B 26 06 45 8B 0A 7E C5 10 45 89 -- 09C0AO
9B 02 C4 83 00 5C ED AF 9A C8 76 FF 12 45 89 OE -- 09C0BO
C4 83 00 5C ED AF 9A 1A 75 FF 12 7E C5 A4 5E DD -- 09C0CO
9A 18 75 FF 12 7E C5 AC 5E DD 9B A4 76 DC 9B 02 -- 09C0DO
FF CO 5E DD 9B AC 46 DC 9B 02 C4 83 00 5C ED AF -- 09C0EO
7E C5 A4 5E DD 9B 02 C4 83 00 5C ED AF 9A C8 76 -- 09C0FO
A4 76 DC 9B 02 C4 83 00 5C ED AF 9A 1E 75 FF 12 -- 09C100
83 00 5C ED AF 9A 1C 75 FF 12 7E C5 AC 5E DD 9B -- 09C110
5E DD 9B EE D9 9B B8 5E DD 9B AC 46 DC 9B 02 C4 -- 09C120
9A AC 5E DC 9B AD 60 26 DC 2E 9B B8 46 DD 9B AC -- 09C130
AD 60 26 DC 2E 9B B8 46 DD 9B OC 76 00 5C ED 94 -- 09C140
9B EO D9 9B AD 60 26 DC 2E 9B B8 46 DD 9B OD EB -- 09C150
9B EE D9 9B 49 73 00 5C ED 94 9A AD 68 1E DC 2E -- 09C160
5E DC 9B AD 60 26 DC 2E 9B CO 46 DD 9B A4 5E DD -- 09C170
26 DC 2E 9B CO 46 DD 9B OC 76 00 5C ED 94 9A A4 -- 09C180
D9 9B AD 60 26 DC 2E 9B CO 46 DD 9B OD EB AD 60 -- 09C190

46 C7 07 73 00 5C ED 94 9A AD 68 1E DC 2E 9B EO -- 09C1AO
03 75 00 B6 7E 83 00 01 B6 46 C7 05 EB 00 00 B6 -- 09C1BO
89 EO D1 05 8B 0A 7E C5 00 34 D9 7E 9A 00 DB E9 -- 09C1CO
FF 50 D6 46 8D 16 DA 46 89 EO D1 04 45 8B D8 46 -- 09C1DO
9A 03 EE 68 06 6A 50 D8 46 8D 16 CA 76 FF CC 76 -- 09C1EO
2D 02 55 8B 05 8B CA 7E C5 10 C4 83 00 64 40 DO -- 09C1FO
0A 55 89 08 45 89 OE 7E C5 00 DA 83 00 01 01 FE -- 09C200
89 OC 45 89 OE 7E C5 06 55 8B 04 45 8B CA 7E C5 -- 09C210
06 45 8B D8 46 89 EO D1 02 45 8B 0A 7E C5 0E 55 -- 09C220
CA 76 FF CC 76 FF 50 D6 46 8D 16 DA 46 89 EO D1 -- 09C230
83 00 64 40 DO 9A 03 EE 68 06 6A 50 D8 46 8D 16 -- 09C240
00 01 2D 02 55 8B 05 8B CA 7E C5 OE 76 C4 10 C4 -- 09C250
D2 83 00 01 05 0A 54 1B 26 08 44 2B 26 00 DA 83 -- 09C260
8B 04 45 8B CA 7E C5 02 55 89 05 89 OE 7E C5 00 -- 09C270
00 D2 83 00 01 05 OE 54 1B 26 OC 44 2B 26 06 55 -- 09C280
7F EB 00 34 DA 22 9A 06 55 89 04 45 89 OE 7E C5 -- 09C290
7E C5 12 76 C4 CA 8B D8 8B 99 14 45 8B 12 7E C5 -- 09C2AO
D1 1B C3 2B 0A 54 13 26 08 44 03 26 99 05 8B 0A -- 09C2BO
99 16 45 8B 12 7E C5 0A 55 89 08 45 89 OE 7E C5 -- 09C2CO
26 OC 44 03 26 99 04 45 8B 0A 7E C5 CA 8B D8 8B -- 09C2DO
OE 55 89 OC 45 89 OE 7E C5 D1 1B C3 2B OE 54 13 -- 09C2EO
99 C6 8B 46 37 2B 26 02 75 8B 0A 7E C5 0A 5E C4 -- 09C2FO
2B 26 06 75 8B 0A 7E C5 02 55 89 05 89 OE 7E C5 -- 09C300
9B 06 55 89 04 45 89 OE 7E C5 99 C6 8B 46 04 77 -- 09C310
D2 F1 A9 FC 3F F0 00 00 00 00 00 00 CB 5E 5F C9 -- 09C320
C7 00 01 F4 46 C7 00 00 16 C8 57 56 3F 50 62 4D -- 09C330
C5 2E 00 01 FA 46 C7 00 01 F8 46 C7 00 01 F6 46 -- 09C340
4E 56 9A 08 00 68 15 75 05 0B 02 45 8B B2 50 3E -- 09C350
2E 02 55 89 05 89 B2 50 3E C5 2E 02 C4 83 00 64 -- 09C360
```

687

```
B2 5A 36 FF 2E 57 56 39 75 00 3D 83 B2 54 3E C5 -- 09C370
68 35 FF 02 75 FF B2 5C 3E C5 2E B2 58 36 FF 2E -- 09C380
62 36 FF 2E 04 00 68 5E 5F 00 5C FF 6A 9A 04 00 -- 09C390
B2 58 36 FF 2E B2 5A 36 FF 2E B2 60 36 FF 2E B2 -- 09C3A0
FF 2E B2 58 36 FF 2E B2 5A 36 FF 2E 57 56 37 EB -- 09C3B0
00 5C FF 6A 9A 04 00 68 B2 64 36 FF 2E B2 66 36 -- 09C3C0
2E B2 60 36 FF 2E B2 62 36 FF 2E 04 00 68 5E 5F -- 09C3D0
F6 28 9A 02 6A 01 6A 35 FF 02 75 FF B2 5C 3E C5 -- 09C3E0
15 E9 03 74 00 FE 7E 83 FE 46 89 0E C4 83 00 5C -- 09C3F0
2E B2 68 36 FF 2E B2 6A 36 FF 2E 00 6A 02 01 FE -- 09C400
C4 83 00 5C 42 50 9A B2 60 36 FF 2E B2 62 36 FF -- 09C410
36 FF 2E B2 6A 36 FF 2E 35 FF B2 6C 3E C5 2E 0A -- 09C420
70 3E C5 2E 08 C4 83 00 34 00 00 9A 00 6A B2 68 -- 09C430
6A 57 B2 72 36 FF 2E 50 FE 46 8D 16 06 05 C6 B2 -- 09C440
FE 7E 83 0E C4 83 00 64 40 D0 9A 6E 6A 05 6A 01 -- 09C450
A7 E9 02 C4 83 00 2C D0 F8 9A FE 76 FF 0E 74 00 -- 09C460
2E 00 C9 E9 03 7C 04 FC 7E 83 00 00 FC 46 C7 01 -- 09C470
8E 2E B2 74 3E 03 2E E7 D1 FC 7E 8B B2 6C 36 C4 -- 09C480
3E C5 2E 00 97 E9 03 75 04 23 26 05 8B B2 76 1E -- 09C490
9B B2 90 3E C5 2E 00 5C ED 99 9A 05 D9 9B B2 94 -- 09C4A0
3E 03 2E 02 E7 C1 FC 7E 8B 00 5C ED 99 9A 05 D9 -- 09C4B0
8B 00 5C ED 99 9A 05 D9 9B B2 8E 1E 8E 2E B2 8C -- 09C4C0
9B B2 8A 1E 8E 2E B2 88 3E 03 2E 02 E7 C1 FC 7E -- 09C4D0
B2 84 06 03 2E 14 FC 46 6B 00 5C ED 99 9A 05 D9 -- 09C4E0
B2 80 06 03 2E 14 FC 46 6B 50 52 B2 86 16 8B 2E -- 09C4F0
B2 7C 06 03 2E 14 FC 46 6B 50 52 B2 82 16 8B 2E -- 09C500
B2 78 06 03 2E 18 FC 46 6B 50 52 B2 7E 16 8B 2E -- 09C510
83 00 34 2A 1D 9A FC 76 FF 50 52 B2 7A 16 8B 2E -- 09C520
F4 45 C7 1F 16 FD 03 E7 D1 FC 7E 8B 0E EB 32 C4 -- 09C530

16 8B 2E B2 7C 06 8B 2E FF 2E E9 FC 46 FF 00 00 -- 09C540
16 8B 2E B2 84 06 8B 2E F0 56 89 EE 46 89 B2 7E -- 09C550
0F 05 C7 B2 98 3E C5 2E EC 56 89 EA 46 89 B2 86 -- 09C560
89 04 45 89 06 45 89 B2 9C 3E C5 2E 00 01 B8 00 -- 09C570
89 06 45 89 B2 A0 3E C5 2E 00 01 B8 05 89 02 45 -- 09C580
F2 46 8D 16 50 F4 46 8D 16 05 89 02 45 89 04 45 -- 09C590
68 75 C0 0B FE 46 89 08 C4 83 00 2C B6 2C 9A 50 -- 09C5A0
05 C6 B2 70 3E C5 2E 00 00 05 C7 B2 98 3E C5 2E -- 09C5B0
05 6A 01 6A 57 B2 72 36 FF 2E 50 FE 46 8D 16 16 -- 09C5C0
03 74 00 FE 7E 83 0E C4 83 00 64 40 D0 9A 6E 6A -- 09C5D0
02 05 C7 B2 A4 3E C5 2E 00 2C CC CD 9A FE 80 E9 -- 09C5E0
36 FF 2E B2 A8 36 FF 2E B2 AA 36 FF 2E 57 56 00 -- 09C5F0
5C FF 6A 9A 04 00 68 B2 58 36 FF 2E B2 5A 01 FE -- 09C600
56 CB 5E 5F C9 9B C0 2B 00 54 4D FE 9A 5E 5F 00 -- 09C610
58 36 FF 2E B2 5A 36 FF 2E 57 56 00 00 06 C8 57 -- 09C620
6A 9A 04 00 68 35 FF 02 75 FF B2 5C 3E C5 2E B2 -- 09C630
FF 02 75 FF B2 5C 3E C5 2E 57 56 5E 5F 00 5C FF -- 09C640
6A 9A 04 00 68 35 FF 02 75 FF B2 50 3E C5 2E 35 -- 09C650
7E 7D 04 FE 7E 83 00 00 FE 46 C7 5E 5F 00 5C FF -- 09C660
8B B2 76 1E 8E 2E B2 74 3E 03 2E E7 D1 FE 7E 8B -- 09C670
05 8B B2 AC 3E C5 2E B2 6C 36 C4 2E FA 46 89 05 -- 09C680
3E C5 2E 50 FC 46 8D 16 50 74 FA 46 23 04 23 26 -- 09C690
06 03 2E 09 E0 C1 FE 46 8B 35 FF 02 75 FF B2 B4 -- 09C6A0
C5 2E 00 6A FE 76 FF 50 52 B2 5A 16 8B 2E B2 58 -- 09C6B0
40 D0 9A 01 45 68 09 6A 50 E4 2A 05 8A B2 B0 3E -- 09C6C0
F8 9A FC 76 FF 0D 74 00 FC 7E 83 16 C4 83 00 64 -- 09C6D0
5F C9 FF 7C E9 FE 46 FF 06 EB 02 C4 83 00 2C D0 -- 09C6E0
FF B2 50 3E C5 2E 57 56 00 00 06 C8 57 56 CB 5E -- 09C6F0
00 68 35 FF 02 75 FF B2 5C 3E C5 2E 35 FF 02 75 -- 09C700
00 3D 83 B2 B8 3E C5 2E 5E 5F 00 5C FF 6A 9A 04 -- 09C710
```

688

```
FF  2E  35  FF  02  75  FF  B2  5C  3E  C5  2E  57  56  20  74  --  09C720
00  5C  FF  6A  9A  04  00  68  B2  58  36  FF  2E  B2  5A  36  --  09C730
FF  2E  B2  58  36  FF  2E  B2  5A  36  FF  2E  57  56  5E  5F  --  09C740
00  5C  FF  6A  9A  04  00  68  B2  64  36  FF  2E  B2  66  36  --  09C750
FE  7E  8B  7E  7D  04  FE  7E  83  00  00  FE  46  C7  5E  5F  --  09C760
46  89  05  8B  B2  76  1E  8E  2E  B2  74  3E  03  2E  E7  D1  --  09C770
04  23  26  05  8B  B2  AC  3E  C5  2E  B2  6C  36  C4  2E  FA  --  09C780
FF  B2  B4  3E  C5  2E  50  FC  46  8D  16  50  74  FA  46  23  --  09C790
2E  B2  58  06  03  2E  09  E0  C1  FE  46  8B  35  FF  02  75  --  09C7A0
B2  B0  3E  C5  2E  00  6A  FE  76  FF  50  52  B2  5A  16  8B  --  09C7B0
83  00  64  40  D0  9A  01  45  68  09  6A  50  E4  2A  05  8A  --  09C7C0
00  2C  D0  F8  9A  FC  76  FF  0D  74  00  FC  7E  83  16  C4  --  09C7D0
56  CB  5E  5F  C9  FF  7C  E9  FE  46  FF  06  EB  02  C4  83  --  09C7E0
35  FF  02  75  FF  B2  5C  3E  C5  2E  57  56  EC  8B  55  57  --  09C7F0
9A  04  00  68  35  FF  02  75  FF  B2  50  3E  C5  2E  01  FE  --  09C800
30  E2  00  24  FF  FA  CB  5E  5F  C9  5E  5F  00  5C  FF  6A  --  09C810
4D  5C  00  24  6A  40  00  6C  30  E8  00  3C  6E  86  00  6C  --  09C820
3D  14  00  24  76  E2  00  24  75  4E  00  24  74  40  00  24  --  09C830
76  52  00  24  75  A2  00  24  75  52  00  24  75  F2  00  24  --  09C840
76  F6  00  24  76  F2  00  24  3D  00  00  24  3C  F0  00  24  --  09C850
86  9A  00  24  77  18  00  24  77  10  00  24  75  50  00  24  --  09C860
76  FA  00  24  3D  48  00  3C  6E  84  00  24  3D  58  00  3C  --  09C870
C5  2E  0C  46  8B  EC  8B  55  57  56  00  6C  16  4A  00  24  --  09C880
2E  B7  A2  36  FF  2E  B7  A4  36  FF  2E  05  88  B7  9E  3E  --  09C890
00  64  40  D0  9A  6E  6A  05  6A  01  6A  57  B7  A0  36  FF  --  09C8A0
B7  A6  3E  C5  2E  05  D9  9B  B7  AA  3E  C5  2E  0E  C4  83  --  09C8B0
B7  AE  3E  C5  2E  05  D9  9B  B7  B2  3E  C5  2E  1D  D9  9B  --  09C8C0
B7  B6  3E  C5  2E  05  D9  9B  B7  BA  3E  C5  2E  1D  D9  9B  --  09C8D0

B7  BE  3E  C5  2E  05  D9  9B  B7  C2  3E  C5  2E  1D  D9  9B  --  09C8E0
76  FF  50  05  89  B7  C6  3E  C5  2E  FF  FF  B8  1D  D9  9B  --  09C8F0
57  56  CB  5E  5F  C9  9B  04  C4  83  00  5C  B4  C2  9A  0A  --  09C900
36  FF  2E  05  88  B7  9E  3E  C5  2E  0C  46  8B  EC  8B  55  --  09C910
6A  01  6A  57  B7  A0  36  FF  2E  B7  A2  36  FF  2E  B7  A4  --  09C920
B7  CA  3E  C5  2E  0E  C4  83  00  64  40  D0  9A  6E  6A  05  --  09C930
B7  CE  36  C4  2E  1D  D9  9B  B7  A6  3E  C5  2E  05  D9  9B  --  09C940
AE  3E  C5  2E  04  D8  26  9B  05  D9  9B  B7  CA  3E  C5  2E  --  09C950
B6  3E  C5  2E  05  D9  9B  B7  D2  3E  C5  2E  1D  D9  9B  B7  --  09C960
D9  9B  B7  D2  3E  C5  2E  B7  D6  36  C4  2E  1D  D9  9B  B7  --  09C970
FF  FF  B8  1D  D9  9B  B7  BE  3E  C5  2E  04  D8  26  9B  05  --  09C980
00  5C  B4  C2  9A  0A  76  FF  50  05  89  B7  C6  3E  C5  2E  --  09C990
3E  C5  2E  EC  8B  55  57  56  CB  5E  5F  C9  9B  04  C4  83  --  09C9A0
36  C4  2E  1D  D9  9B  B7  A6  3E  C5  2E  05  D9  9B  B7  CA  --  09C9B0
C5  2E  04  D8  26  9B  05  D9  9B  B7  CA  3E  C5  2E  B7  CE  --  09C9C0
C5  2E  05  D9  9B  B7  D2  3E  C5  2E  1D  D9  9B  B7  AE  3E  --  09C9D0
B7  D2  3E  C5  2E  B7  D6  36  C4  2E  1D  D9  9B  B7  B6  3E  --  09C9E0
B8  1D  D9  9B  B7  BE  3E  C5  2E  04  D8  26  9B  05  D9  9B  --  09C9F0
9A  0A  76  FF  50  05  89  B7  C6  3E  C5  2E  00  01  01  FE  --  09CA00
8B  55  57  56  CB  5E  5F  C9  9B  04  C4  83  00  5C  B4  C2  --  09CA10
D9  9B  B7  A6  3E  C5  2E  05  D9  9B  B7  DA  3E  C5  2E  EC  --  09CA20
26  9B  05  D9  9B  B7  DA  3E  C5  2E  B7  DE  36  C4  2E  1D  --  09CA30
9B  B7  E2  3E  C5  2E  1D  D9  9B  B7  AE  3E  C5  2E  04  D8  --  09CA40
2E  B7  E6  36  C4  2E  1D  D9  9B  B7  B6  3E  C5  2E  05  D9  --  09CA50
B7  BE  3E  C5  2E  04  D8  26  9B  05  D9  9B  B7  E2  3E  C5  --  09CA60
76  FF  50  05  89  B7  C6  3E  C5  2E  00  01  B8  1D  D9  9B  --  09CA70
57  56  CB  5E  5F  C9  9B  04  C4  83  00  5C  B4  C2  9A  0A  --  09CA80
B7  B6  3E  C5  2E  FF  3B  86  88  0A  46  8B  00  00  C8  C8  --  09CA90
9B  05  D9  9B  B7  A6  3E  C5  2E  92  5E  D9  9B  05  D9  9B  --  09CAA0
05  D9  9B  B7  BE  3E  C5  2E  B7  B6  36  C4  2E  8E  5E  D9  --  09CAB0
3E  C5  2E  B7  A6  36  C4  2E  96  5E  D9  9B  24  D8  26  9B  --  09CAC0
```

689

```
48 86 8D 9A 5E D9 9B 24 D8 26 9B 05 D9 9B B7 AE -- 09CAD0
6A 50 52 57 56 FF 46 96 89 FF 44 86 89 5A 16 FF -- 09CAE0
E4 2A FF 3B 86 8A 5E 5F 00 8C 00 02 9A 46 6A 00 -- 09CAF0
A6 3E C5 2E 00 00 08 45 C7 0A 45 89 FF 44 BE C5 -- 09CB00
B6 3E C5 2E 34 5D D9 9B FF 44 BE C5 05 D9 9B B7 -- 09CB10
AE 3E C5 2E 38 5D D9 9B FF 44 BE C5 05 D9 9B B7 -- 09CB20
BE 3E C5 2E 40 5D D9 9B FF 44 BE C5 05 D9 9B B7 -- 09CB30
EA 3E C5 2E 3C 5D D9 9B FF 44 BE C5 05 D9 9B B7 -- 09CB40
46 8D 00 00 05 C7 B7 EE 3E C5 2E 00 04 05 C7 B7 -- 09CB50
0C 46 8B 02 55 89 05 89 B7 F2 3E C5 2E 5A 16 9E -- 09CB60
6A FE 76 FF 00 61 FE 46 C7 05 89 B7 F6 3E C5 2E -- 09CB70
3E 96 89 FF 3C 86 89 04 C4 83 00 64 4E A1 9A 01 -- 09CB80
8D 16 00 6A 00 6A 00 6A 50 E4 2A FF 3B 86 8A FF -- 09CB90
2C DE 1A 9A FF 3C B6 FF 52 FE 76 FF 50 FF 48 86 -- 09CBA0
2E 21 74 00 FF 40 BE 83 FF 40 86 89 12 C4 83 00 -- 09CBB0
C4 83 00 5C 97 1E 9A B7 FA 36 FF 2E B7 FC 36 FF -- 09CBC0
01 84 E9 02 C4 83 00 64 59 DC 9A FF 40 B6 FF 04 -- 09CBD0
2A FF 3B 86 8A A0 56 89 9E 46 89 5A 16 B6 46 8D -- 09CBE0
8B A2 46 88 E4 2A 05 8A FF 3C BE C5 A3 46 88 E4 -- 09CBF0
9B AE 5E D9 9B 10 45 D9 9B A4 46 89 06 45 01 FE -- 09CC00
9B A6 5E D9 9B 08 45 D9 9B B2 5E D9 9B 14 45 D9 -- 09CC10
42 BE 83 00 01 FF 42 86 C7 AA 5E D9 9B 0C 45 D9 -- 09CC20
86 8D 16 50 FF 39 86 8D 16 00 EA E9 03 7E 03 FF -- 09CC30
C4 83 00 2C FE 3D 9A 50 FF 3C 86 8D 16 50 FF 3A -- 09CC40
FF 42 B6 8B 1F 16 FD 03 F8 8B 18 FF 42 86 6B 0C -- 09CC50
55 89 9E 45 89 00 62 2D D2 8C C5 03 18 C6 6B 46 -- 09CC60
86 8A FE 03 1F 16 FD 8B F0 8B 18 FF 42 86 6B A0 -- 09CC70

6B E4 2A 05 8A FF 3C BE C5 A3 45 88 E4 2A FF 3B -- 09CC80
C5 A2 45 88 FE 03 1F 16 FD 8B F2 8B 18 FF 42 96 -- 09CC90
16 FD 8B F2 8B 18 FF 42 96 6B 06 45 8B FF 3C BE -- 09CCA0
86 6B 10 45 D9 9B FF 3C BE C5 A4 45 89 FE 03 1F -- 09CCB0
C5 AE 5D D9 9B FE 03 1F 16 FD 8B F0 8B 18 FF 42 -- 09CCC0
FD 8B F0 8B 18 FF 42 86 6B 14 45 D9 9B FF 3C BE -- 09CCD0
08 45 D9 9B FF 3C BE C5 B2 5D D9 9B FE 03 1F 16 -- 09CCE0
5D D9 9B FE 03 1F 16 FD 8B F0 8B 18 FF 42 86 6B -- 09CCF0
F0 8B 18 FF 42 86 6B 0C 45 D9 9B FF 3C BE C5 A6 -- 09CD00
0C E9 FF 42 86 FF AA 5D D9 9B FE 03 1F 16 FD 8B -- 09CD10
F2 36 FF 2E B7 F4 36 FF 2E 50 FF 40 86 8D 16 FF -- 09CD20
BE 83 0C C4 83 00 64 40 D0 9A 00 CE 68 04 6A B7 -- 09CD30
9A B7 FE 36 FF 2E B8 00 36 FF 2E 11 74 00 FF 40 -- 09CD40
E3 9A FF 3C B6 FF FF 3E B6 FF 0D EB 00 5C 97 1E -- 09CD50
00 3C 91 18 00 CB 5E 5F C9 9B 04 C4 83 00 64 4E -- 09CD60
00 3C 92 3C 00 6C 2C EA 00 3C 92 38 00 6C 32 1C -- 09CD70
00 3C 92 44 00 6C 2C EE 00 3C 92 40 00 6C 2D 12 -- 09CD80
00 3C 90 7A 00 3C 90 A0 00 6C 32 1E 00 6C 2D 16 -- 09CD90
00 6C 29 2A 00 6C 28 E0 00 3C 90 7E 00 3C 90 A4 -- 09CDA0
00 3C 92 4A 00 3C 92 48 00 6C 29 26 00 6C 28 E4 -- 09CDB0
00 6C 32 0C 00 6C 31 F2 00 3C 92 36 00 3C 92 32 -- 09CDC0
BD 1E 36 FF 2E 00 00 FE 46 C7 00 00 08 C8 57 56 -- 09CDD0
FE 46 89 04 C4 83 00 64 52 82 9A BD 1C 36 FF 2E -- 09CDE0
9A 50 04 6A 00 6A 00 6A 00 6A 11 74 00 FE 7E 83 -- 09CDF0
20 3E C5 2E 0A 46 8B 0A C4 83 00 64 28 52 01 FE -- 09CE00
BD 24 3E C5 2E E4 2A FB 46 88 00 FF B8 05 89 BD -- 09CE10
88 E4 2A 0A 45 88 E4 2A 06 45 88 E4 2A 02 45 88 -- 09CE20
45 88 E4 2A 16 45 88 E4 2A 12 45 88 E4 2A 0E 45 -- 09CE30
45 88 E4 2A F8 46 88 00 FF B8 1E 45 88 E4 2A 1A -- 09CE40
2A FA 46 88 C0 2B 05 88 E4 2A F9 46 88 C0 2B 01 -- 09CE50
FF 2E 50 F8 46 8D 16 50 FE 46 8D 16 03 45 88 E4 -- 09CE60
40 D0 9A 01 97 68 06 6A BD 28 36 FF 2E BD 2A 36 -- 09CE70
```

```
6A  00  6A  00  6A  13  74  00  FE  7E  83  10  C4  83  00  64  --  09CE80
CO  2B  0A  C4  83  00  64  28  52  9A  FE  76  FF  04  6A  00  --  09CE90
00  FF  B8  05  45  88  BD  24  3E  C5  2E  E4  2A  F8  46  88  --  09CEA0
88  E4  2A  FA  46  88  CO  2B  04  45  88  E4  2A  F9  46  88  --  09CEB0
2A  36  FF  2E  50  F8  46  8D  16  50  FE  46  8D  16  07  45  --  09CEC0
9A  01  97  68  06  6A  50  00  03  05  BD  28  06  8B  2E  BD  --  09CED0
6A  00  6A  13  74  00  FE  7E  83  10  C4  83  00  64  40  DO  --  09CEE0
0A  C4  83  00  64  28  52  9A  FE  76  FF  04  6A  00  6A  00  --  09CEF0
2B  09  45  88  BD  24  3E  C5  2E  E4  2A  F8  46  88  CO  2B  --  09CF00
2A  FA  46  88  00  FF  B8  08  45  88  E4  2A  F9  46  88  CO  --  09CF10
FF  2E  50  F8  46  8D  16  50  FE  46  8D  16  0B  45  88  E4  --  09CF20
97  68  06  6A  50  00  06  05  BD  28  06  8B  2E  BD  2A  36  --  09CF30
6A  13  74  00  FE  7E  83  10  C4  83  00  64  40  DO  9A  01  --  09CF40
83  00  64  28  52  9A  FE  76  FF  04  6A  00  6A  00  6A  00  --  09CF50
88  BD  24  3E  C5  2E  E4  2A  F8  46  88  00  FF  B8  0A  C4  --  09CF60
88  CO  2B  0C  45  88  E4  2A  F9  46  88  00  FF  B8  0D  45  --  09CF70
F8  46  8D  16  50  FE  46  8D  16  0F  45  88  E4  2A  FA  46  --  09CF80
6A  50  00  09  05  BD  28  06  8B  2E  BD  2A  36  FF  2E  50  --  09CF90
00  FE  7E  83  10  C4  83  00  64  40  DO  9A  01  97  68  06  --  09CFA0
28  52  9A  FE  76  FF  04  6A  00  6A  00  6A  00  6A  13  74  --  09CFB0
24  3E  C5  2E  E4  2A  F8  46  88  CO  2B  0A  C4  83  00  64  --  09CFC0
B8  10  45  88  E4  2A  F9  46  88  00  FF  B8  11  45  88  BD  --  09CFD0
16  50  FE  46  8D  16  13  45  88  E4  2A  FA  46  88  00  FF  --  09CFE0
0C  05  BD  28  06  8B  2E  BD  2A  36  FF  2E  50  F8  46  8D  --  09CFF0
C4  83  00  64  40  DO  9A  01  97  68  06  6A  50  00  01  FE  --  09D000
FF  04  6A  00  6A  00  6A  00  6A  13  74  00  FE  7E  83  10  --  09D010

F8  46  88  00  FF  B8  0A  C4  83  00  64  28  52  9A  FE  76  --  09D020
2A  F9  46  88  CO  2B  15  45  88  BD  24  3E  C5  2E  E4  2A  --  09D030
16  17  45  88  E4  2A  FA  46  88  00  FF  B8  14  45  88  E4  --  09D040
8B  2E  BD  2A  36  FF  2E  50  F8  46  8D  16  50  FE  46  8D  --  09D050
64  40  DO  9A  01  97  68  06  6A  50  00  0F  05  BD  28  06  --  09D060
00  6A  00  6A  00  6A  13  74  00  FE  7E  83  10  C4  83  00  --  09D070
88  CO  2B  0A  C4  83  00  64  28  52  9A  FE  76  FF  04  6A  --  09D080
46  88  CO  2B  19  45  88  BD  24  3E  C5  2E  E4  2A  F8  46  --  09D090
1B  45  88  E4  2A  FA  46  88  CO  2B  18  45  88  E4  2A  F9  --  09D0A0
2E  BD  2A  36  FF  2E  50  F8  46  8D  16  50  FE  46  8D  16  --  09D0B0
40  DO  9A  01  97  68  06  6A  50  00  12  05  BD  28  06  8B  --  09D0C0
6A  00  6A  00  6A  13  74  00  FE  7E  83  10  C4  83  00  64  --  09D0D0
FF  B8  0A  C4  83  00  64  28  52  9A  FE  76  FF  04  6A  00  --  09D0E0
FF  B8  1D  45  88  BD  24  3E  C5  2E  E4  2A  F8  46  88  00  --  09D0F0
2A  FA  46  88  00  FF  B8  1C  45  88  E4  2A  F9  46  88  00  --  09D100
FF  2E  50  F8  46  8D  16  50  FE  46  8D  16  1F  45  88  E4  --  09D110
97  68  06  6A  50  00  15  05  BD  28  06  8B  2E  BD  2A  36  --  09D120
6A  13  74  00  FE  7E  83  10  C4  83  00  64  40  DO  9A  01  --  09D130
83  00  64  28  52  9A  FE  76  FF  04  6A  00  6A  00  6A  00  --  09D140
00  00  FC  46  C7  00  00  05  C7  BD  2C  3E  C5  2E  0A  C4  --  09D150
3E  03  2E  02  E7  C1  FC  7E  8B  1A  7F  00  F8  FC  7E  81  --  09D160
EB  FC  46  FF  05  88  FC  46  8B  BD  32  1E  8E  2E  BD  30  --  09D170
00  00  08  C8  57  56  CB  5E  5F  C9  00  5C  BB  B8  9A  DF  --  09D180
E9  03  75  00  3D  83  BD  34  3E  C5  2E  00  00  FE  46  C7  --  09D190
28  06  03  2E  03  05  6B  BD  2C  3E  C5  2E  03  6A  00  CC  --  09D1A0
ED  6E  9A  50  F8  46  8D  16  50  52  BD  2A  16  8B  2E  BD  --  09D1B0
81  FC  46  89  05  8B  BD  20  3E  C5  2E  0A  C4  83  00  5C  --  09D1C0
FC  46  8B  50  F8  46  8D  16  03  6A  2F  7F  00  F8  FC  7E  --  09D1D0
8B  D8  8B  BD  32  16  8B  2E  BD  30  06  03  2E  02  E0  C1  --  09D1E0
0A  C4  83  00  5C  ED  6E  9A  50  00  01  05  C3  8B  51  CA  --  09D1F0
26  FC  46  8B  BD  20  36  C4  2E  CA  EB  FC  46  FF  01  FE  --  09D200
E9  03  75  CO  0B  E4  2A  05  88  BD  38  3E  C5  2E  04  2B  --  09D210
30  06  03  2E  02  E0  C1  05  8B  BD  20  3E  C5  2E  00  A8  --  09D220
```

```
02 55 89 05 89 BD 3C 3E C5 2E BD 32 16 8B 2E BD -- 09D230
6A BD 38 36 FF 2E BD 3A 36 FF 2E 50 FE 46 8D 16 -- 09D240
10 C4 83 00 64 40 D0 9A 01 32 68 06 6A 00 6A 01 -- 09D250
4F EB 04 6A 00 6A 00 6A 00 6A 64 74 00 FE 7E 83 -- 09D260
E7 C1 3D 8B BD 2C 3E C5 2E 02 6A 50 FE 46 8D 16 -- 09D270
C5 2E 02 75 FF BD 26 1E 8E 2E BD 24 3E 03 2E 02 -- 09D280
1E 8E 2E BD 24 3E 03 2E 02 E7 C1 3D 8B BD 2C 3E -- 09D290
C4 83 00 64 40 D0 9A 01 4C 68 05 6A 35 FF BD 26 -- 09D2A0
FF 00 6A 00 6A 00 6A 00 6A 13 74 00 FE 7E 83 0E -- 09D2B0
83 BD 40 3E C5 2E 0A C4 83 00 64 28 52 9A FE 76 -- 09D2C0
05 FF BD 2C 3E C5 2E 00 5C DC 3F 9A 05 74 00 3D -- 09D2D0
00 CB 5E 5F C9 00 00 05 C7 04 75 00 08 3D 05 8B -- 09D2E0
00 3C FE 2A 00 3C FE 5C 00 3C FA 3E 00 3C FE 44 -- 09D2F0
00 3C FA 40 00 3C FE 48 00 3C FA 46 00 3C FE 42 -- 09D300
FF 1E 06 EC 8B 55 57 56 00 3C FA 3C 00 3C FA 41 -- 09D310
76 FF 10 76 FF 12 76 FF 14 76 FF 16 76 FF 18 76 -- 09D320
E5 8B 07 1F 0D E8 68 DF 9A 0A 76 FF 0C 76 FF 0E -- 09D330
C9 23 08 B8 00 00 9A EC 8B 55 00 10 CA 5E 5F 5D -- 09D340
12 9A D2 32 00 02 CA 5D 0F 89 26 06 5E C4 0A 75 -- 09D350
C9 23 08 A8 00 00 9A EC 8B 55 00 ED EB 00 5C BF -- 09D360
12 9A D2 32 00 08 CA 5D 0F 89 26 06 5E C4 0A 75 -- 09D370
C9 23 09 10 00 00 9A EC 8B 55 00 ED EB 00 5C BF -- 09D380
12 9A D2 32 00 08 CA 5D 0F 89 26 06 5E C4 0A 75 -- 09D390
C9 23 08 20 00 00 9A EC 8B 55 00 ED EB 00 5C BF -- 09D3A0
12 9A D2 32 00 06 CA 5D 0F 89 26 06 5E C4 0A 75 -- 09D3B0

C9 23 08 E0 00 00 9A EC 8B 55 00 ED EB 00 5C BF -- 09D3C0
12 9A D2 32 00 06 CA 5D 0F 89 26 06 5E C4 0A 75 -- 09D3D0
C9 23 08 F0 00 00 9A EC 8B 55 00 ED EB 00 5C BF -- 09D3E0
12 9A D2 32 00 0C CA 5D 0F 89 26 06 5E C4 0A 75 -- 09D3F0
08 68 00 00 9A EC 8B 55 00 ED EB 00 5C BF 01 FE -- 09D400
D2 32 00 0A CA 5D 0F 89 26 06 5E C4 0A 75 C9 23 -- 09D410
08 60 00 00 9A EC 8B 55 00 ED EB 00 5C BF 12 9A -- 09D420
D2 32 00 08 CA 5D 0F 89 26 06 5E C4 0A 75 C9 23 -- 09D430
08 58 00 00 9A EC 8B 55 00 ED EB 00 5C BF 12 9A -- 09D440
D2 32 00 08 CA 5D 0F 89 26 06 5E C4 0A 75 C9 23 -- 09D450
08 70 00 00 9A EC 8B 55 00 ED EB 00 5C BF 12 9A -- 09D460
D2 32 00 06 CA 5D 0F 89 26 06 5E C4 0A 75 C9 23 -- 09D470
08 E8 00 00 9A EC 8B 55 00 ED EB 00 5C BF 12 9A -- 09D480
D2 32 00 0C CA 5D 0F 89 26 06 5E C4 0A 75 C9 23 -- 09D490
08 78 00 00 9A EC 8B 55 00 ED EB 00 5C BF 12 9A -- 09D4A0
D2 32 00 06 CA 5D 0F 89 26 06 5E C4 0A 75 C9 23 -- 09D4B0
08 80 00 00 9A EC 8B 55 00 ED EB 00 5C BF 12 9A -- 09D4C0
D2 32 00 0C CA 5D 0F 89 26 06 5E C4 0A 75 C9 23 -- 09D4D0
C0 33 52 51 11 79 C9 0B 00 ED EB 00 5C BF 12 9A -- 09D4E0
FF FF B8 00 5C BF 2C 9A 53 06 06 5E C4 50 50 50 -- 09D4F0
26 06 5E C4 1F 04 90 00 00 9A 1E EC 8B 55 00 CB -- 09D500
DB 0A 0A 5E 8B EC 8B 55 00 0E CA 5D 00 00 07 C7 -- 09D510
80 0B EB 1A 72 80 00 F9 81 08 75 01 FB 80 25 74 -- 09D520
00 6A 52 51 52 51 0D 73 80 00 F9 81 06 75 02 FB -- 09D530
8B 55 00 06 CA FF FF B8 5D 59 5A 06 5E FF 00 6A -- 09D540
26 06 5E C4 0A 75 C9 23 1F 03 60 00 00 9A 1E EC -- 09D550
8B 55 00 EF EB 00 5C BF 42 9A 00 06 CA 5D 0F 89 -- 09D560
26 06 5E C4 0A 75 C9 23 1F 03 18 00 00 9A 1E EC -- 09D570
8B 55 00 EF EB 00 5C BF 42 9A 00 06 CA 5D 0F 89 -- 09D580
26 06 5E C4 0A 75 C9 23 1F 03 28 00 00 9A 1E EC -- 09D590
8B 55 00 EF EB 00 5C BF 42 9A 00 06 CA 5D 0F 89 -- 09D5A0
26 06 5E C4 0A 75 C9 23 1F 03 70 00 00 9A 1E EC -- 09D5B0
8B 55 00 EF EB 00 5C BF 42 9A 00 06 CA 5D 0F 89 -- 09D5C0
26 06 5E C4 0A 75 C9 23 1F 03 30 00 00 9A 1E EC -- 09D5D0
```

```
8B 55 00 EF EB 00 5C BF 42 9A 00 0A CA 5D 0F 89 -- 09D5E0
26 06 5E C4 0A 75 C9 23 1F 03 78 00 00 9A 1E EC -- 09D5F0
00 EF EB 00 5C BF 42 9A 00 06 CA 5D 0F 89 01 FE -- 09D600
5E C4 0A 75 C9 23 1F 04 A0 00 00 9A 1E EC 8B 55 -- 09D610
00 EF EB 00 5C BF 42 9A 00 06 CA 5D 0F 89 26 06 -- 09D620
0B 75 C9 23 5E 03 E8 00 00 9A 01 6A 1E EC 8B 55 -- 09D630
00 5C BF 42 9A 00 08 CA 5D 0F 89 26 06 5E C4 1F -- 09D640
0A 75 C9 23 1F 04 00 00 00 9A 1E EC 8B 55 EE EB -- 09D650
EB 00 5C BF 42 9A 00 06 CA 5D 0F 89 26 06 5E C4 -- 09D660
0A 75 C9 23 1F 04 58 00 00 9A 1E EC 8B 55 00 EF -- 09D670
EB 00 5C BF 42 9A 00 0A CA 5D 0F 89 26 06 5E C4 -- 09D680
0A 75 C9 23 1F 04 18 00 00 9A 1E EC 8B 55 00 EF -- 09D690
EB 00 5C BF 42 9A 00 0C CA 5D 0F 89 26 06 5E C4 -- 09D6A0
0A 75 C9 23 1F 04 30 00 00 9A 1E EC 8B 55 00 EF -- 09D6B0
EB 00 5C BF 42 9A 00 0C CA 5D 0F 89 26 06 5E C4 -- 09D6C0
0A 75 C9 23 1F 03 48 00 00 9A 1E EC 8B 55 00 EF -- 09D6D0
EB 00 5C BF 42 9A 00 06 CA 5D 0F 89 26 06 5E C4 -- 09D6E0
0A 75 C9 23 1F 03 00 00 00 9A 1E EC 8B 55 00 EF -- 09D6F0
EB 00 5C BF 42 9A 00 0A CA 5D 0F 89 26 06 5E C4 -- 09D700
0A 75 C9 23 1F 04 60 00 00 9A 1E EC 8B 55 00 EF -- 09D710
EB 00 5C BF 42 9A 00 08 CA 5D 0F 89 26 06 5E C4 -- 09D720
0A 75 C9 23 1F 04 38 00 00 9A 1E EC 8B 55 00 EF -- 09D730
EB 00 5C BF 42 9A 00 0A CA 5D 0F 89 26 06 5E C4 -- 09D740
0A 75 C9 23 1F 03 D0 00 00 9A 1E EC 8B 55 00 EF -- 09D750

EB 00 5C BF 42 9A 00 08 CA 5D 0F 89 26 06 5E C4 -- 09D760
0A 75 C9 23 1F 04 68 00 00 9A 1E EC 8B 55 00 EF -- 09D770
EB 00 5C BF 42 9A 00 08 CA 5D 0F 89 26 06 5E C4 -- 09D780
5E C4 0A 75 C9 23 05 78 00 00 9A EC 8B 55 00 EF -- 09D790
EB 00 5C BF 12 9A D2 32 00 0E CA 5D 0F 89 26 06 -- 09D7A0
5E C4 0A 75 C9 23 05 88 00 00 9A EC 8B 55 00 ED -- 09D7B0
EB 00 5C BF 12 9A D2 32 00 0E CA 5D 0F 89 26 06 -- 09D7C0
5E C4 0A 75 C9 23 06 00 00 00 9A EC 8B 55 00 ED -- 09D7D0
EB 00 5C BF 12 9A D2 32 00 0A CA 5D 0F 89 26 06 -- 09D7E0
5E C4 0A 75 C9 23 05 B0 00 00 9A EC 8B 55 00 ED -- 09D7F0
5C BF 12 9A D2 32 00 0E CA 5D 0F 89 26 06 01 FE -- 09D800
0A 75 C9 23 06 50 00 00 9A EC 8B 55 00 ED EB 00 -- 09D810
5C BF 12 9A D2 32 00 0A CA 5D 0F 89 26 06 5E C4 -- 09D820
3D 83 C6 FC 3E C5 2E EC 8B 55 57 56 00 ED EB 00 -- 09D830
36 FF 2E C7 04 36 FF 2E C7 06 36 FF 2E 1F 74 00 -- 09D840
83 00 14 41 D7 9A 00 80 68 C7 00 36 FF 2E C7 02 -- 09D850
5C E0 79 9A C7 08 36 FF 2E C7 0A 36 FF 2E 0A C4 -- 09D860
FF 2E C7 04 36 FF 2E C7 06 36 FF 2E 04 C4 83 00 -- 09D870
00 14 41 D7 9A 00 80 68 C7 00 36 FF 2E C7 02 36 -- 09D880
FC 3E C5 2E 00 02 05 C7 C7 0C 3E C5 2E 0A C4 83 -- 09D890
FF 2E EC 8B 55 57 56 CB 5E 5F C9 00 01 05 C7 C6 -- 09D8A0
04 C4 83 00 5C E0 79 9A C7 10 36 FF 2E C7 12 36 -- 09D8B0
2E C7 02 36 FF 2E C7 04 36 FF 2E C7 06 36 FF 2E -- 09D8C0
2E 0A C4 83 00 14 41 D7 9A 00 80 68 C7 00 36 FF -- 09D8D0
5E 5F C9 00 5C C3 17 9A 00 00 05 C7 C7 14 3E C5 -- 09D8E0
1C 36 FF 2E C7 1E 36 FF 2E 00 00 38 C8 57 56 CB -- 09D8F0
40 D0 9A 01 F6 68 03 6A 35 FF C7 18 3E C5 2E C7 -- 09D900
FF 0A 74 00 3D 83 C7 1C 3E C5 2E 0A C4 83 00 64 -- 09D910
B3 44 9A 00 6A 21 6A 02 C4 83 00 64 59 DC 9A 35 -- 09D920
2E C7 1C 36 FF 2E C7 1E 36 FF 2E 04 C4 83 00 5C -- 09D930
00 64 40 D0 9A 01 F5 68 03 6A 35 FF C7 18 3E C5 -- 09D940
9A 35 FF 0A 74 00 3D 83 C7 1C 3E C5 2E 0A C4 83 -- 09D950
C5 2E 05 8B C7 18 3E C5 2E 02 C4 83 00 64 59 DC -- 09D960
9A 00 14 23 88 9A 00 14 50 43 9A 05 89 C7 20 3E -- 09D970
D9 9B C7 00 3E C5 2E C7 24 36 C4 2E 00 14 19 D9 -- 09D980
```

693

```
00 3E C5 2E 4A 76 00 5C ED 94 9A 1C D8 26 9B 05 -- 09D990
89 05 8B C7 08 3E C5 2E E8 5E D9 9B 05 D9 9B C7 -- 09D9A0
9B C7 00 3E C5 2E 05 D9 9B C7 24 3E C5 2E D8 46 -- 09D9B0
05 89 C7 08 3E C5 2E 05 8B C7 10 3E C5 2E 1D D9 -- 09D9C0
2E D8 46 8B 1D D9 9B C7 24 3E C5 2E E8 46 D9 9B -- 09D9D0
C7 04 3E C5 2E C7 28 36 C4 2E 05 89 C7 10 3E C5 -- 09D9E0
C5 2E 4A 76 00 5C ED 94 9A 1C D8 26 9B 05 D9 9B -- 09D9F0
2C 3E C5 2E EC 5E D9 9B 05 D9 9B C7 04 3E 01 FE -- 09DA00
C5 2E 05 D9 9B C7 28 3E C5 2E DA 46 89 05 8B C7 -- 09DA10
3E C5 2E 05 8B C7 30 3E C5 2E 1D D9 9B C7 04 3E -- 09DA20
1D D9 9B C7 28 3E C5 2E EC 46 D9 9B 05 89 C7 2C -- 09DA30
83 C7 14 3E C5 2E 05 89 C7 30 3E C5 2E DA 46 8B -- 09DA40
DB 9B 3D C5 C7 38 3E C5 2E 00 86 E9 03 75 00 3D -- 09DA50
C4 C7 38 3E C5 2E 1D D9 9B C7 34 3E C5 2E 3C 45 -- 09DA60
54 13 26 0C 44 03 26 3E 55 8B 3C 45 8B 3D C5 35 -- 09DA70
C4 83 00 5C ED C3 9A 50 52 00 DA 83 00 01 2D 0E -- 09DA80
3D C5 C7 38 3E C5 2E 1D D9 9B C7 3C 3E C5 2E 04 -- 09DA90
38 3E C5 2E 1D D9 9B C7 40 3E C5 2E 38 45 DB 9B -- 09DAA0
26 08 44 03 26 3A 55 8B 38 45 8B 3D C5 35 C4 C7 -- 09DAB0
00 5C ED C3 9A 50 52 00 DA 83 00 01 2D 0A 54 13 -- 09DAC0
36 FF 2E 4C EB 1D D9 9B C7 44 3E C5 2E 04 C4 83 -- 09DAD0
34 36 FF 2E C7 36 36 FF 2E C7 40 36 FF 2E C7 42 -- 09DAE0
00 64 26 2C 9A C7 08 36 FF 2E C7 0A 36 FF 2E C7 -- 09DAF0

36 FF 2E C7 44 36 FF 2E C7 46 36 FF 2E 0C C4 83 -- 09DB00
10 36 FF 2E C7 12 36 FF 2E C7 3C 36 FF 2E C7 3E -- 09DB10
C5 2E C7 4C 36 C4 2E 0C C4 83 00 64 26 2C 9A C7 -- 09DB20
9B C7 48 3E C5 2E 34 D8 26 9B 05 D9 9B C7 34 3E -- 09DB30
9B 05 D9 9B C7 40 3E C5 2E C7 54 36 C4 2E 1D D9 -- 09DB40
C7 4C 3E C5 2E 1D D9 9B C7 50 3E C5 2E 34 D8 26 -- 09DB50
C4 2E D0 5E DD 9B E8 D9 9B C8 5E D9 9B 05 D9 9B -- 09DB60
9B 24 D8 26 9B 05 D9 9B C7 3C 3E C5 2E C7 34 36 -- 09DB70
2E 1D D9 9B C7 58 3E C5 2E C8 76 D8 9B D0 46 DC -- 09DB80
DD 9B E8 D9 9B C8 5E D9 9B 05 D9 9B C7 54 3E C5 -- 09DB90
9B 05 D9 9B C7 44 3E C5 2E C7 40 36 C4 2E D0 5E -- 09DBA0
C7 5C 3E C5 2E C8 76 D8 9B D0 46 DC 9B 24 D8 26 -- 09DBB0
04 C4 83 00 5C B3 44 9A 00 FF 68 1C 6A 1D D9 9B -- 09DBC0
C6 4E 9A 04 C4 83 00 5C B2 BC 9A 00 FF 68 21 6A -- 09DBD0
62 36 FF 2E C7 1C 36 FF 2E C7 1E 36 FF 2E 00 5C -- 09DBE0
00 64 40 D0 9A 01 F8 68 04 6A C7 60 36 FF 2E C7 -- 09DBF0
FF 0A 74 00 3D 83 C7 1C 3E C5 2E 0C C4 83 01 FE -- 09DC00
05 C7 C7 20 3E C5 2E 02 C4 83 00 64 59 DC 9A 35 -- 09DC10
1C C8 57 56 CB 5E 5F C9 9B 00 14 1B 67 9A 00 00 -- 09DC20
46 C6 00 00 F4 46 C7 F6 5E D9 9B EE D9 9B 00 00 -- 09DC30
C6 C7 64 3E C5 2E FF FE 46 C6 FF FD 46 C6 00 FC -- 09DC40
6A 01 6A 57 C7 66 36 FF 2E 50 F4 46 8D 16 23 05 -- 09DC50
C7 00 3E C5 2E 0E C4 83 00 64 40 D0 9A 6E 6A 05 -- 09DC60
9B 05 D9 9B C7 24 3E C5 2E EC 5E D9 9B 05 D9 9B -- 09DC70
2E E4 5E D9 9B 05 D9 9B C7 04 3E C5 2E F0 5E D9 -- 09DC80
50 F4 46 8D 16 E8 5E D9 9B 05 D9 9B C7 28 3E C5 -- 09DC90
16 50 E4 46 8D 16 50 FC 46 8D 16 50 F6 46 8D 16 -- 09DCA0
00 64 40 D0 9A 00 CC 68 0B 6A 01 6A 50 EC 46 8D -- 09DCB0
64 59 DC 9A F4 76 FF 0B 74 00 F4 7E 83 1A C4 83 -- 09DCC0
2C EA 00 3C 7A DE 00 CB 5E 5F C9 9B 02 C4 83 00 -- 09DCD0
2D 02 00 3C 86 7A 00 6C 2C DA 00 6C 2C EE 00 6C -- 09DCE0
86 9E 00 6C 2C D8 00 3C 86 28 00 6C 2D 2A 00 6C -- 09DCF0
2D 04 00 6C 2C DC 00 6C 2D 16 00 6C 2D 12 00 3C -- 09DD00
2D 40 00 6C 2D 44 00 3C 90 82 00 6C 2D 3C 00 6C -- 09DD10
2D 30 00 3C 90 98 00 6C 2D 2C 00 6C 2D 48 00 6C -- 09DD20
86 16 00 6C 2D 38 00 6C 2D 34 00 3C 90 9C 00 6C -- 09DD30
```

694

```
01 16 7E 83 00 00 08 C8 57 56 00 3C 91 18 00 3C -- 09DD40
DD 9B EE D9 9B 00 88 E9 03 74 03 16 7E 83 09 74 -- 09DD50
64 D8 26 9B 38 45 D9 9B 0A 7E C5 0A 76 C4 F8 5E -- 09DD60
C5 0A 76 C4 11 76 00 5C ED 94 9A F8 5E DC 9B 10 -- 09DD70
0A 76 C4 12 EB 10 64 D8 26 9B 38 45 D9 9B 0A 7E -- 09DD80
9B E0 D9 9B 10 64 D8 26 9B 38 45 D9 9B 0A 7E C5 -- 09DD90
C5 EE D9 9B 0B 73 00 5C ED 94 9A CC 40 1E DC 2E -- 09DDA0
45 D9 9B 0A 7E C5 0A 76 C4 2C EB 1D D9 9B 0E 7E -- 09DDB0
0A 7E C5 0A 76 C4 F8 5E DD 9B 10 64 D8 26 9B 38 -- 09DDC0
0E 7E C5 F8 76 DC 9B 10 64 D8 26 9B 60 45 D9 9B -- 09DDD0
E9 03 74 03 16 7E 83 09 74 02 16 7E 83 1D D9 9B -- 09DDE0
9B 0A 7E C5 0A 76 C4 F8 5E DD 9B EE D9 9B 00 88 -- 09DDF0
94 9A F8 5E DC 9B 14 64 D8 26 9B 3C 45 D9 01 FE -- 09DE00
9B 3C 45 D9 9B 0A 7E C5 0A 76 C4 11 76 00 5C ED -- 09DE10
3C 45 D9 9B 0A 7E C5 0A 76 C4 12 EB 14 64 D8 26 -- 09DE20
94 9A CC 40 1E DC 2E 9B E0 D9 9B 14 64 D8 26 9B -- 09DE30
2C EB 1D D9 9B 12 7E C5 EE D9 9B 0B 73 00 5C ED -- 09DE40
9B 14 64 D8 26 9B 3C 45 D9 9B 0A 7E C5 0A 76 C4 -- 09DE50
D8 26 9B 64 45 D9 9B 0A 7E C5 0A 76 C4 F8 5E DD -- 09DE60
03 16 7E 83 1D D9 9B 12 7E C5 F8 76 DC 9B 14 64 -- 09DE70
9A 1C D8 26 9B 05 D9 9B 0E 7E C5 12 76 C4 30 75 -- 09DE80
7E C5 06 EB 05 D9 9B 0E 7E C5 08 76 00 5C ED 94 -- 09DE90

1D D9 9B 0E 7E C5 15 D9 9B 12 7E C5 05 D9 9B 12 -- 09DEA0
7E C5 CC 48 06 DD 2E 9B 0E 75 01 16 7E 83 20 EB -- 09DEB0
9B 0E 7E C5 CC 48 06 DD 2E 9B 0C EB 1D D9 9B 12 -- 09DEC0
94 9A CC 50 1E DC 2E 9B 05 D9 9B 0E 7E C5 1D D9 -- 09DED0
50 1E DC 2E 9B 05 D9 9B 12 7E C5 13 76 00 5C ED -- 09DEE0
9B C0 2B 02 EB 00 01 B8 05 77 00 5C ED 94 9A CC -- 09DEF0
05 D9 9B 0A 7E C5 00 00 20 C8 57 56 CB 5E 5F C9 -- 09DF00
D9 9B EC 5E D9 9B 05 D9 9B 0E 7E C5 F4 5E D9 9B -- 09DF10
04 65 D8 9B F4 46 D9 9B 0A 7E C5 E0 5E DD 9B EE -- 09DF20
D9 9B 0A 7E C5 0D 76 00 5C ED 94 9A E0 5E DC 9B -- 09DF30
9B F4 46 D9 9B 0A 7E C5 0E EB 04 65 D8 9B F4 46 -- 09DF40
5C ED 94 9A CC 40 1E DC 2E 9B E0 D9 9B 04 65 D8 -- 09DF50
F8 5E D9 9B F4 46 D9 9B 00 01 FC 46 C7 0F 73 00 -- 09DF60
5E DD 9B 04 65 D8 9B F4 46 D9 9B 0A 7E C5 27 EB -- 09DF70
E0 76 DC 9B 04 65 D8 9B EC 46 D9 9B 0E 7E C5 E0 -- 09DF80
04 45 D9 9B 0A 7E C5 00 00 FC 46 C7 E8 5E D9 9B -- 09DF90
7E C5 00 90 E9 03 73 00 5C ED 94 9A F4 5E D8 9B -- 09DFA0
7E 72 00 5C ED 94 9A EC 5E D8 9B 04 45 D9 9B 0E -- 09DFB0
5E D9 9B 0C 45 D9 9B 12 7E C5 0E 74 00 FC 7E 83 -- 09DFC0
9B F8 5E D9 9B 04 45 D9 9B 12 7E C5 02 28 E9 F0 -- 09DFD0
9B E8 46 D9 9B E0 5E DD 9B F4 66 D8 9B F8 46 D9 -- 09DFE0
D9 9B 12 7E C5 F0 5E D9 9B EC 46 D8 9B E0 4E DC -- 09DFF0
E9 03 77 00 5C ED 94 9A 0C 5D D8 9B F0 46 01 FE -- 09E000
46 D9 9B F0 5E D9 9B 0C 45 D9 9B 12 7E C5 01 EC -- 09E010
46 DC 9B F0 46 D9 9B E0 5E DD 9B F4 4E D8 9B E8 -- 09E020
01 BE E9 F8 5E D9 9B E8 76 D8 9B EC 66 D8 9B E0 -- 09E030
00 5C ED 94 9A F4 5E D8 9B 04 45 D9 9B 0A 7E C5 -- 09E040
EC 5E D8 9B 04 45 D9 9B 0E 7E C5 00 8F E9 03 72 -- 09E050
12 7E C5 0E 74 00 FC 7E 83 7D 72 00 5C ED 94 9A -- 09E060
D9 9B 12 7E C5 01 83 E9 F0 5E D9 9B 0C 45 D9 9B -- 09E070
5E DD 9B F4 66 D8 9B F8 46 D9 9B F8 5E D9 9B 05 -- 09E080
5E D9 9B EC 46 D8 9B E0 4E DC 9B E8 46 D9 9B E0 -- 09E090
5C ED 94 9A 0C 5D D8 9B F0 46 D9 9B 12 7E C5 F0 -- 09E0A0
5E D9 9B 0C 45 D9 9B 12 7E C5 01 48 E9 03 77 00 -- 09E0B0
46 D9 9B E0 5E DD 9B F4 4E D8 9B E8 46 D9 9B F0 -- 09E0C0
5E D9 9B E8 76 D8 9B EC 66 D8 9B E0 46 DC 9B F0 -- 09E0D0
9A F4 5E D8 9B 04 45 D9 9B 0A 7E C5 01 1A E9 F8 -- 09E0E0
```

```
04 45 D9 9B 0E 7E C5 00 8E E9 03 72 00 5C ED 94 -- 09E0F0
74 00 FC 7E 83 7C 73 00 5C ED 94 9A EC 5E D8 9B -- 09E100
C5 00 DF E9 F0 5E D9 9B 08 45 D9 9B 12 7E C5 0E -- 09E110
66 D8 9B F8 46 D9 9B F8 5E D9 9B 05 D9 9B 12 7E -- 09E120
46 D8 9B E0 4E DC 9B E8 46 D9 9B E0 5E DD 9B F4 -- 09E130
08 5D D8 9B F0 46 D9 9B 12 7E C5 F0 5E D9 9B EC -- 09E140
45 D9 9B 12 7E C5 00 A4 E9 03 72 00 5C ED 94 9A -- 09E150
5E DD 9B F4 4E D8 9B E8 46 D9 9B F0 5E D9 9B 08 -- 09E160
76 D8 9B EC 66 D8 9B E0 46 DC 9B F0 46 D9 9B E0 -- 09E170
12 7E C5 0D 74 00 FC 7E 83 77 EB F8 5E D9 9B E8 -- 09E180
45 D9 9B 12 7E C5 64 EB F0 5E D9 9B 08 45 D9 9B -- 09E190
5E DD 9B F4 66 D8 9B F8 46 D9 9B F8 5E D9 9B 04 -- 09E1A0
5E D9 9B EC 46 D8 9B E0 4E DC 9B E8 46 D9 9B E0 -- 09E1B0
5C ED 94 9A 08 5D D8 9B F0 46 D9 9B 12 7E C5 F0 -- 09E1C0
D9 9B F0 5E D9 9B 08 45 D9 9B 12 7E C5 2B 73 00 -- 09E1D0
DC 9B F0 46 D9 9B E0 5E DD 9B F4 4E D8 9B E8 46 -- 09E1E0
8D 16 F8 5E D9 9B E8 76 D8 9B EC 66 D8 9B E0 46 -- 09E1F0
6A 50 F4 46 8D 16 50 EC 46 8D 16 50 FE 46 01 FE -- 09E200
C9 9B 12 C4 83 00 64 40 D0 9A 00 C9 68 07 6A 02 -- 09E210
00 00 00 00 3F 50 62 4D D2 F1 A9 FC 00 CB 5E 5F -- 09E220
06 C8 57 56 00 00 00 00 00 00 00 00 3F F0 00 00 -- 09E230

2E 0A 76 FF 00 00 FA 46 C7 00 00 FE 46 C7 00 00 -- 09E240
C4 83 00 5C 97 1E 9A D0 E6 36 FF 2E D0 E8 36 FF -- 09E250
2E D0 EE 36 C4 2E EC 8B 55 57 56 CB 5E 5F C9 06 -- 09E260
36 FF 2E 20 7D 04 3B 26 48 48 05 8B D0 EA 3E C5 -- 09E270
6A 04 C4 83 00 64 55 16 9A D0 F2 36 FF 2E D0 F4 -- 09E280
3E C5 2E 30 EB C0 2B 02 C4 83 00 5C CC 58 9A 0D -- 09E290
FF 2E D0 FC 36 FF 2E 0C 75 00 01 3D 05 8B D0 F6 -- 09E2A0
36 C4 2E 02 2D 83 D0 EA 3E C5 2E D2 EB D0 FA 36 -- 09E2B0
5E 5F C9 05 8B 02 5C 8E 26 3C 03 26 3D 8B D0 FE -- 09E2C0
D0 EA 3E C5 2E D0 EE 36 C4 2E EC 8B 55 57 56 CB -- 09E2D0
2E D1 04 36 FF 2E 21 7D 04 3B 26 00 04 2D 05 8B -- 09E2E0
58 9A 0D 6A 04 C4 83 00 64 55 16 9A D1 02 36 FF -- 09E2F0
D0 F6 3E C5 2E 31 EB EE D9 9B 02 C4 83 00 5C CC -- 09E300
06 36 FF 2E D1 08 36 FF 2E 0C 75 00 01 3D 05 8B -- 09E310
D0 FE 36 C4 2E 04 2D 83 D0 EA 3E C5 2E D1 EB D1 -- 09E320
5E 5F C9 9B 05 D9 9B 02 5C 8E 26 3C 03 26 3D 8B -- 09E330
00 5C ED 99 9A 00 5C CC ED 9A EC 8B 55 57 56 CB -- 09E340
8B 55 57 56 CB 5E 5F C9 08 C4 83 00 64 54 18 9A -- 09E350
3B 26 48 05 8B D0 EA 3E C5 2E D0 EE 36 C4 2E EC -- 09E360
55 16 9A D1 0A 36 FF 2E D1 0C 36 FF 2E 20 7D 04 -- 09E370
2B 02 C4 83 00 5C CC 58 9A 0D 6A 04 C4 83 00 64 -- 09E380
2E 0C 75 00 01 3D 05 8B D0 F6 3E C5 2E 30 EB C0 -- 09E390
D0 FE 1E C4 2E D2 EB D1 0E 36 FF 2E D1 10 36 FF -- 09E3A0
02 5F 8E 26 3F 03 26 3C 8B 0C FF D0 EA 36 C5 2E -- 09E3B0
EA 3E C5 2E EC 8B 55 57 56 CB 5E 5F C9 98 05 8A -- 09E3C0
2E D1 14 36 FF 2E 20 7E 01 F4 3D 40 40 05 8B D0 -- 09E3D0
58 9A 0D 6A 04 C4 83 00 64 55 16 9A D1 12 36 FF -- 09E3E0
8B D0 F6 3E C5 2E 38 EB C0 2B 02 C4 83 00 5C CC -- 09E3F0
36 FF 2E D1 18 36 FF 2E 0C 75 00 01 3D 05 01 FE -- 09E400
3D 8B D0 EA 3E C5 2E D0 FE 36 C4 2E D2 EB D1 16 -- 09E410
EA 3E C5 2E 05 89 0A 46 8B 02 5C 8E 26 3C 03 26 -- 09E420
36 C4 2E EC 8B 55 57 56 CB 5E 5F C9 02 05 83 D0 -- 09E430
7E 04 3B 26 00 04 05 05 8B D0 EA 3E C5 2E D1 1A -- 09E440
00 64 55 16 9A D1 1E 36 FF 2E D1 20 36 FF 2E 20 -- 09E450
EB C0 2B 02 C4 83 00 5C CC 58 9A 0D 6A 04 C4 83 -- 09E460
36 FF 2E 0C 75 00 01 3D 05 8B D0 F6 3E C5 2E 3A -- 09E470
C5 2E D0 FE 36 C4 2E D2 EB D1 22 36 FF 2E D1 24 -- 09E480
0A 46 DD 9B 02 5C 8E 26 3C 03 26 3D 8B D0 EA 3E -- 09E490
```

696

```
CB 5E 5F C9 9B 04 05 83 D0 EA 3E C5 2E 1D D9 9B -- 09E4A0
D0 EA 3E C5 2E D1 1A 36 C4 2E 00 00 04 C8 57 56 -- 09E4B0
36 FF 2E D1 28 36 FF 2E 20 7E 04 3B 26 40 05 8B -- 09E4C0
5C CC 58 9A 0D 6A 04 C4 83 00 64 55 16 9A D1 26 -- 09E4D0
3D 05 8B D0 F6 3E C5 2E 3D EB C0 2B 02 C4 83 00 -- 09E4E0
D2 EB D1 2A 36 FF 2E D1 2C 36 FF 2E 0C 75 00 01 -- 09E4F0
FE 56 89 FC 46 89 02 55 8B 05 8B D0 FE 3E C5 2E -- 09E500
FE 5E 8E F8 03 04 FF 26 3C 8B 26 D0 EA 36 C4 2E -- 09E510
C7 00 00 06 C8 57 56 CB 5E 5F C9 05 88 0A 46 8B -- 09E520
21 75 00 01 3D 05 8B D0 F6 3E C5 2E 00 00 FE 46 -- 09E530
83 00 64 55 16 9A D1 2E 36 FF 2E D1 30 36 FF 2E -- 09E540
84 E9 C0 2B 02 C4 83 00 5C CC 58 9A 0D 6A 04 C4 -- 09E550
00 5C CD E3 9A 00 6A 09 75 0A 46 0B 0C 46 8B 00 -- 09E560
00 3D 80 0A 7E C5 EF 74 00 3D 80 0A 7E C5 E7 EB -- 09E570
3B 26 05 8B D0 EA 3E C5 2E D1 1A 36 C4 2E 4E 74 -- 09E580
2E AB EB D1 32 36 FF 2E D1 34 36 FF 2E 0C 75 04 -- 09E590
C5 FC 56 89 FA 46 89 02 55 8B 05 8B D0 FE 3E C5 -- 09E5A0
3C 8B 26 D0 EA 36 C4 2E 98 05 8A 0A 46 FF 0A 7E -- 09E5B0
AA EB FE 46 FF 05 88 FC 5E 8E FA 7E 03 04 FF 26 -- 09E5C0
CD E3 9A FE 76 FF 02 C4 83 00 5C CE CA 9A 00 6A -- 09E5D0

C7 00 00 02 C8 57 56 CB 5E 5F C9 02 C4 83 00 5C -- 09E5E0
20 75 00 01 3D 05 8B D0 F6 3E C5 2E 00 00 FE 46 -- 09E5F0
64 55 16 9A D1 36 36 FF 2E D1 38 36 FF 2E 01 FE -- 09E600
C0 2B 02 C4 83 00 5C CC 58 9A 0D 6A 04 C4 83 00 -- 09E610
B8 05 7C 0A 46 3B FE 46 89 00 5C CC 81 9A 75 EB -- 09E620
00 05 C6 0C 7E C5 08 75 00 FE 7E 83 63 EB FF FF -- 09E630
C4 2E 00 5C CD 78 9A 05 75 00 01 FE 46 F7 DC EB -- 09E640
05 8B 05 29 D0 EA 3E C5 2E 40 FE 46 8B D0 EE 36 -- 09E650
EB D1 3A 36 FF 2E D1 3C 36 FF 2E 0C 7D 04 3B 26 -- 09E660
04 03 26 05 8B D0 EA 3E C5 2E D0 FE 36 C4 2E 9B -- 09E670
64 5B B4 9A 0C 76 FF 0E 76 FF 50 52 02 54 8B 26 -- 09E680
EC 8B 55 57 56 CB 5E 5F C9 FE 46 8B 08 C4 83 00 -- 09E690
0A 76 FF 0C 76 FF 57 56 64 2D 83 D0 EA 3E C5 2E -- 09E6A0
50 52 02 54 8B 26 04 03 26 05 8B D0 FE 36 C4 2E -- 09E6B0
03 DE 00 CB 5E 5F C9 5E 5F 00 5C FE EC 9A 64 6A -- 09E6C0
2B 08 00 6C 03 F5 00 6C 2B 0C 00 6C 2B 0A 00 6C -- 09E6D0
04 73 00 6C 04 51 00 6C 2B 20 00 6C 04 17 00 6C -- 09E6E0
05 29 00 6C 05 09 00 6C 04 CF 00 6C 04 AD 00 6C -- 09E6F0
05 BD 00 6C 05 83 00 6C 05 63 00 6C 2B 1E 00 6C -- 09E700
06 71 00 6C 06 51 00 6C 06 17 00 6C 05 DD 00 6C -- 09E710
68 DF 9A 00 6A EC 8B 55 57 56 00 6C 06 AB 00 6C -- 09E720
01 6A EC 8B 55 57 56 CB 5E 5F C9 02 C4 83 0F 88 -- 09E730
8B 55 57 56 CB 5E 5F C9 02 C4 83 0F 88 68 DF 9A -- 09E740
56 CB 5E 5F C9 02 C4 83 0F 88 68 DF 9A 02 6A EC -- 09E750
5F C9 02 C4 83 0F 88 68 DF 9A 03 6A EC 8B 55 57 -- 09E760
C4 83 0F 88 68 DF 9A 04 6A EC 8B 55 57 56 CB 5E -- 09E770
88 68 DF 9A 05 6A EC 8B 55 57 56 CB 5E 5F C9 02 -- 09E780
9A 06 6A EC 8B 55 57 56 CB 5E 5F C9 02 C4 83 0F -- 09E790
EC 8B 55 57 56 CB 5E 5F C9 02 C4 83 0F 88 68 DF -- 09E7A0
57 56 CB 5E 5F C9 02 C4 83 0F 88 68 DF 9A 07 6A -- 09E7B0
5E 5F C9 02 C4 83 0F 88 68 DF 9A 08 6A EC 8B 55 -- 09E7C0
02 C4 83 0F 88 68 DF 9A 09 6A EC 8B 55 57 56 CB -- 09E7D0
0F 88 68 DF 9A 0A 6A EC 8B 55 57 56 CB 5E 5F C9 -- 09E7E0
DF 9A 0B 6A EC 8B 55 57 56 CB 5E 5F C9 02 C4 83 -- 09E7F0
8B 55 57 56 CB 5E 5F C9 02 C4 83 0F 88 68 01 FE -- 09E800
56 CB 5E 5F C9 02 C4 83 0F 88 68 DF 9A 0C 6A EC -- 09E810
5F C9 02 C4 83 0F 88 68 DF 9A 0D 6A EC 8B 55 57 -- 09E820
C4 83 0F 88 68 DF 9A 0E 6A EC 8B 55 57 56 CB 5E -- 09E830
88 68 DF 9A 0F 6A EC 8B 55 57 56 CB 5E 5F C9 02 -- 09E840
```

```
9A  10  6A  EC  8B  55  57  56  CB  5E  5F  C9  02  C4  83  0F  --  09E850
EC  8B  55  57  56  CB  5E  5F  C9  02  C4  83  0F  88  68  DF  --  09E860
57  56  CB  5E  5F  C9  02  C4  83  0F  88  68  DF  9A  11  6A  --  09E870
5E  5F  C9  02  C4  83  0F  88  68  DF  9A  12  6A  EC  8B  55  --  09E880
02  C4  83  0F  88  68  DF  9A  13  6A  EC  8B  55  57  56  CB  --  09E890
0F  88  68  DF  9A  14  6A  EC  8B  55  57  56  CB  5E  5F  C9  --  09E8A0
DF  9A  15  6A  EC  8B  55  57  56  CB  5E  5F  C9  02  C4  83  --  09E8B0
6A  EC  8B  55  57  56  CB  5E  5F  C9  02  C4  83  0F  88  68  --  09E8C0
55  57  56  CB  5E  5F  C9  02  C4  83  0F  88  68  DF  9A  16  --  09E8D0
CB  5E  5F  C9  02  C4  83  0F  88  68  DF  9A  17  6A  EC  8B  --  09E8E0
C9  02  C4  83  0F  88  68  DF  9A  18  6A  EC  8B  55  57  56  --  09E8F0
83  0F  88  68  DF  9A  19  6A  EC  8B  55  57  56  CB  5E  5F  --  09E900
68  DF  9A  1A  6A  EC  8B  55  57  56  CB  5E  5F  C9  02  C4  --  09E910
1B  6A  EC  8B  55  57  56  CB  5E  5F  C9  02  C4  83  0F  88  --  09E920
8B  55  57  56  CB  5E  5F  C9  02  C4  83  0F  88  68  DF  9A  --  09E930
56  CB  5E  5F  C9  02  C4  83  0F  88  68  DF  9A  1C  6A  EC  --  09E940
5F  C9  02  C4  83  0F  88  68  DF  9A  1D  6A  EC  8B  55  57  --  09E950
C4  83  0F  88  68  DF  9A  1E  6A  EC  8B  55  57  56  CB  5E  --  09E960
88  68  DF  9A  1F  6A  EC  8B  55  57  56  CB  5E  5F  C9  02  --  09E970

9A  20  6A  EC  8B  55  57  56  CB  5E  5F  C9  02  C4  83  0F  --  09E980
EC  8B  55  57  56  CB  5E  5F  C9  02  C4  83  0F  88  68  DF  --  09E990
57  56  CB  5E  5F  C9  02  C4  83  0F  88  68  DF  9A  21  6A  --  09E9A0
5E  5F  C9  02  C4  83  0F  88  68  DF  9A  22  6A  EC  8B  55  --  09E9B0
02  C4  83  0F  88  68  DF  9A  23  6A  EC  8B  55  57  56  CB  --  09E9C0
0F  88  68  DF  9A  24  6A  EC  8B  55  57  56  CB  5E  5F  C9  --  09E9D0
DF  9A  25  6A  EC  8B  55  57  56  CB  5E  5F  C9  02  C4  83  --  09E9E0
6A  EC  8B  55  57  56  CB  5E  5F  C9  02  C4  83  0F  88  68  --  09E9F0
56  CB  5E  5F  C9  02  C4  83  0F  88  68  DF  9A  26  01  FE  --  09EA00
5F  C9  02  C4  83  0F  88  68  DF  9A  27  6A  EC  8B  55  57  --  09EA10
C4  83  0F  88  68  DF  9A  28  6A  EC  8B  55  57  56  CB  5E  --  09EA20
88  68  DF  9A  2D  6A  EC  8B  55  57  56  CB  5E  5F  C9  02  --  09EA30
9A  2E  6A  EC  8B  55  57  56  CB  5E  5F  C9  02  C4  83  0F  --  09EA40
EC  8B  55  57  56  CB  5E  5F  C9  02  C4  83  0F  88  68  DF  --  09EA50
57  56  CB  5E  5F  C9  02  C4  83  0F  88  68  DF  9A  2F  6A  --  09EA60
5E  5F  C9  02  C4  83  0F  88  68  DF  9A  30  6A  EC  8B  55  --  09EA70
02  C4  83  0F  88  68  DF  9A  31  6A  EC  8B  55  57  56  CB  --  09EA80
0F  88  68  DF  9A  32  6A  EC  8B  55  57  56  CB  5E  5F  C9  --  09EA90
DF  9A  33  6A  EC  8B  55  57  56  CB  5E  5F  C9  02  C4  83  --  09EAA0
6A  EC  8B  55  57  56  CB  5E  5F  C9  02  C4  83  0F  88  68  --  09EAB0
55  57  56  CB  5E  5F  C9  02  C4  83  0F  88  68  DF  9A  34  --  09EAC0
CB  5E  5F  C9  02  C4  83  0F  88  68  DF  9A  35  6A  EC  8B  --  09EAD0
C9  02  C4  83  0F  88  68  DF  9A  36  6A  EC  8B  55  57  56  --  09EAE0
83  0F  88  68  DF  9A  37  6A  EC  8B  55  57  56  CB  5E  5F  --  09EAF0
68  DF  9A  38  6A  EC  8B  55  57  56  CB  5E  5F  C9  02  C4  --  09EB00
39  6A  EC  8B  55  57  56  CB  5E  5F  C9  02  C4  83  0F  88  --  09EB10
8B  55  57  56  CB  5E  5F  C9  02  C4  83  0F  88  68  DF  9A  --  09EB20
56  CB  5E  5F  C9  02  C4  83  0F  88  68  DF  9A  3A  6A  EC  --  09EB30
5F  C9  02  C4  83  0F  88  68  DF  9A  3B  6A  EC  8B  55  57  --  09EB40
C4  83  0F  88  68  DF  9A  3C  6A  EC  8B  55  57  56  CB  5E  --  09EB50
88  68  DF  9A  3D  6A  EC  8B  55  57  56  CB  5E  5F  C9  02  --  09EB60
9A  3E  6A  EC  8B  55  57  56  CB  5E  5F  C9  02  C4  83  0F  --  09EB70
EC  8B  55  57  56  CB  5E  5F  C9  02  C4  83  0F  88  68  DF  --  09EB80
57  56  CB  5E  5F  C9  02  C4  83  0F  88  68  DF  9A  3F  6A  --  09EB90
5E  5F  C9  02  C4  83  0F  88  68  DF  9A  40  6A  EC  8B  55  --  09EBA0
02  C4  83  0F  88  68  DF  9A  41  6A  EC  8B  55  57  56  CB  --  09EBB0
0F  88  68  DF  9A  42  6A  EC  8B  55  57  56  CB  5E  5F  C9  --  09EBC0
DF  9A  43  6A  EC  8B  55  57  56  CB  5E  5F  C9  02  C4  83  --  09EBD0
6A  EC  8B  55  57  56  CB  5E  5F  C9  02  C4  83  0F  88  68  --  09EBE0
55  57  56  CB  5E  5F  C9  02  C4  83  0F  88  68  DF  9A  44  --  09EBF0
```

698

```
5F C9 02 C4 83 0F 88 68 DF 9A 45 6A EC 8B 01 FE -- 09EC00
00 5C ED 99 9A 0C 46 DD 00 00 4E C8 57 56 CB 5E -- 09EC10
85 8B 2E 02 E7 C1 F8 8B 08 C4 83 00 5C F0 12 9A -- 09EC20
74 C2 0B FE 56 89 FC 46 89 DA 4C 95 8B 2E DA 4A -- 09EC30
FC 7E C5 FA 56 89 F8 46 89 18 56 8B 16 46 8B 24 -- 09EC40
C0 0A 05 88 F8 46 FF F8 7E C5 98 05 8A FC 46 FF -- 09EC50
00 06 14 46 C7 05 7D 00 14 7E 83 01 DC E9 EB 75 -- 09EC60
FF 50 F6 46 8D 16 50 F4 46 8D 16 50 B4 46 8D 16 -- 09EC70
D8 5E 9A 0A 76 FF 00 5C ED 99 9A 0C 46 DD 14 76 -- 09EC80
75 67 0A 7E 83 FE 56 89 FC 46 89 18 C4 83 00 5C -- 09EC90
FF 05 74 00 3D 80 F8 7E C5 FA 56 89 F8 46 89 5C -- 09ECA0
3B 05 75 FE 56 3B FA 56 8B F8 46 8B F3 EB F8 46 -- 09ECB0
F8 4E FF 05 75 30 FF 7D 80 F8 7E C5 0E 74 FC 46 -- 09ECC0
7C FD F6 7E 83 B2 46 89 FC 46 2B F8 46 8B E2 EB -- 09ECD0
0D EB 00 65 0A 46 C7 07 7D F6 46 3B 00 05 05 08 -- 09ECE0
16 46 8B 00 00 14 46 C7 05 7C B2 46 3B F6 46 8B -- 09ECF0
C5 09 74 00 F4 7E 83 FA 56 89 F8 46 89 18 56 8B -- 09ED00
A5 E9 03 74 65 0A 7E 83 2D 05 C6 F8 46 FF F8 7E -- 09ED10

F8 46 FF F8 7E C5 98 05 8A FC 46 FF FC 7E C5 00 -- 09ED20
74 00 5C ED 94 9A DA 2A 1E DC 2E 0C 46 DD 05 88 -- 09ED30
14 7E 83 2E 05 C6 F8 46 FF F8 7E C5 F6 4E FF 03 -- 09ED40
05 8A FC 46 FF 08 74 00 3D 80 FC 7E C5 20 7E 00 -- 09ED50
4E FF 05 88 F8 46 FF F8 7E C5 00 30 B8 03 EB 98 -- 09ED60
00 F6 7E 83 65 05 C6 F8 46 FF F8 7E C5 DA EB 14 -- 09ED70
F8 7E C5 11 EB 2B 05 C6 F8 46 FF F8 7E 8B 0B 7C -- 09ED80
76 FF F6 46 89 D8 F7 F6 46 8B 2D 05 C6 F8 46 FF -- 09ED90
00 5C 97 5E 9A F8 76 FF FA 76 FF DA E8 68 0E F6 -- 09EDA0
C4 83 00 64 5C 0E 9A F8 76 FF FA 76 FF 0A C4 83 -- 09EDB0
FF F8 7E C5 0B 7F 00 F6 7E 83 7B EB F8 46 01 04 -- 09EDC0
FF 08 74 00 3D 80 FC 7E C5 20 EB 30 05 C6 F8 46 -- 09EDD0
F8 46 FF F8 7E C5 00 30 B8 03 EB 98 05 8A FC 46 -- 09EDE0
F8 7E C5 44 74 00 14 7E 83 E0 75 F6 4E FF 05 88 -- 09EDF0
46 8B 35 7E 00 14 7E 83 2E 05 C6 F8 46 FF 01 FE -- 09EE00
05 C6 F8 46 FF F8 7E C5 0B 7D C0 0B F6 46 FF F6 -- 09EE10
05 8A FC 46 FF 08 74 00 3D 80 FC 7E C5 1B EB 30 -- 09EE20
4E FF 05 88 F8 46 FF F8 7E C5 00 30 B8 03 EB 98 -- 09EE30
57 56 CB 5E 5F C9 9B FA 56 8B F8 46 8B C5 EB 14 -- 09EE40
5C ED 94 9A DA 2A 1E DC 2E 0C 46 DD 00 00 12 C8 -- 09EE50
1E DC 2E 0C 46 DD 00 00 07 C7 1A 5E C5 47 72 00 -- 09EE60
00 00 07 C7 16 5E C5 40 75 00 5C ED 94 9A DA 2A -- 09EE70
FF 14 46 8B FE 56 89 FC 46 89 20 56 8B 1E 46 8B -- 09EE80
EB 30 07 C6 FC 46 FF FC 5E C5 0B 74 C0 0B 14 4E -- 09EE90
01 07 C7 1A 5E C5 01 64 E9 00 07 C6 FC 5E C5 EB -- 09EEA0
46 DD 50 F6 46 8D 16 0C 5E DD E0 D9 0C 46 DD 00 -- 09EEB0
D8 DD 0C C4 83 00 5C EE 89 9A 00 5C ED 99 9A 0C -- 09EEC0
ED F9 9A 00 5C ED 99 9A DA 32 36 DC 2E F6 46 DF -- 09EED0
C4 83 00 5C F0 2E 9A 50 FA 46 89 08 C4 83 00 5C -- 09EEE0
9A DA 3A 1E DC 2E 0C 46 DD 0C 5E DD 0C 7E DC 02 -- 09EEF0
DA 42 06 DD 2E 0B EB FA 46 FF 05 72 00 5C ED 94 -- 09EF00
46 DD 07 89 16 5E C5 FA 46 8B 0C 5E DD 0C 4E DC -- 09EF10
F0 8B 08 C4 83 00 5C ED F9 9A 00 5C ED 99 9A 0C -- 09EF20
89 14 46 8B FE 56 89 FC 46 89 20 56 8B 1E 46 8B -- 09EF30
7E 83 19 75 67 0A 7E 83 17 74 66 0A 7E 83 F8 46 -- 09EF40
8B 08 7C FA 46 3B 00 05 05 14 46 8B 13 7C 00 FA -- 09EF50
7E 83 F8 46 89 40 14 46 8B 04 EB 14 46 03 FA 46 -- 09EF60
C7 05 7E 11 F8 7E 83 00 00 F8 46 C7 05 7D 00 F8 -- 09EF70
46 FF FC 5E C5 3C 7D F8 7E 3B FF 2B 00 11 F8 46 -- 09EF80
C4 83 00 5C ED A7 9A 56 07 88 00 30 05 C6 8B FC -- 09EF90
DD DA 42 0E DC 2E EE 66 DC 0C 46 DD EE 5E DD 02 -- 09EFA0
```

699

```
83 00 5C ED F9 9A 00 5C ED 99 9A 0C 46 DD 0C 5E -- 09EFB0
05 FE 83 00 07 C6 FC 5E C5 BF EB 47 F0 8B 08 C4 -- 09EFC0
1E 46 3B 05 75 20 56 3B FE 56 8B FC 46 8B 3C 7C -- 09EFD0
00 39 3D 98 07 8A 07 FE FC 5E C5 FC 4E FF 18 74 -- 09EFE0
31 07 C6 FC 5E C5 D8 EB 30 07 C6 FC 5E C5 1C 7E -- 09EFF0
07 FF 16 5E C5 00 07 C6 FC 5E 03 F8 5E 8B 01 FE -- 09F000
00 00 00 00 00 CB 5E 5F C9 9B 20 56 8B 1E 46 8B -- 09F010
00 00 00 00 40 0A 93 4F 09 79 A3 71 00 00 00 00 -- 09F020
00 5C DA 8A 40 24 00 00 00 00 00 00 3F F0 00 00 -- 09F030
00 00 00 00 00 5C DA AC 00 5C DA 9F 00 5C DA 97 -- 09F040
00 00 00 00 00 5C DA C1 00 00 00 00 00 5C DA B4 -- 09F050
00 5C DA CE 00 00 00 00 00 00 00 00 00 00 00 00 -- 09F060
55 20 2B 7B 00 00 00 00 00 5C DA DB 00 00 00 00 -- 09F070
7D 4E 41 4E 20 2B 7B 00 7D 6C 61 6D 72 6F 6E 6E -- 09F080
2D 7B 00 7D 6C 61 6D 72 6F 6E 6E 55 20 2D 7B 00 -- 09F090
74 69 6E 69 66 6E 49 20 2B 7B 00 7D 4E 41 4E 20 -- 09F0A0
00 7D 79 74 69 6E 69 66 6E 49 20 2D 7B 00 7D 79 -- 09F0B0

20 2D 7B 00 7D 6C 61 6D 72 6F 6E 65 44 20 2B 7B -- 09F0C0
57 56 00 00 75 25 00 7D 6C 61 6D 72 6F 6E 65 44 -- 09F0D0
5E 5F C9 05 88 DF 48 3E C5 2E 0A 46 8B EC 8B 55 -- 09F0E0
0F DE 46 C7 00 07 DC 46 C7 00 00 2C C8 57 56 CB -- 09F0F0
DF 4C 3E C5 2E 00 0E E2 46 C7 00 06 E0 46 C7 00 -- 09F100
89 DF 4C 3E C5 2E DF 50 3E F7 2E 99 05 8B 05 FF -- 09F110
2E DF 52 3E 03 2E F8 8B 03 DA 46 6B DA 56 89 15 -- 09F120
8B 03 DA 46 6B D7 46 88 E4 2A 05 8A DF 54 1E 8E -- 09F130
E4 2A 01 45 8A DF 54 1E 8E 2E DF 52 3E 03 2E F8 -- 09F140
8E 2E DF 52 3E 03 2E F8 8B 03 DA 46 6B D6 46 88 -- 09F150
5A 16 EC 46 8D D5 46 88 E4 2A 02 45 8A DF 54 1E -- 09F160
0A 74 4E 3D 80 DF 48 3E C5 2E EA 56 89 E8 46 89 -- 09F170
2B 02 EB 00 01 B8 05 75 46 3D 80 DF 48 3E C5 2E -- 09F180
C5 2E 0A 74 4E 3D 80 DF 48 3E C5 2E D9 46 88 C0 -- 09F190
88 C0 2B 02 EB 00 01 B8 05 75 48 3D 80 DF 48 3E -- 09F1A0
05 E8 46 83 E4 46 FF 07 EB 00 00 E4 46 C7 D8 46 -- 09F1B0
8B 1F 16 FD 03 E7 D1 E4 7E 8B 4C 7D 04 E4 7E 83 -- 09F1C0
88 E8 7E C5 E4 2A D7 46 8A 05 88 E8 7E C5 DC 45 -- 09F1D0
D5 46 8A 02 45 88 E8 7E C5 E4 2A D6 46 8A 01 45 -- 09F1E0
46 8A 07 7D 02 E4 7E 83 03 45 88 E8 7E C5 E4 2A -- 09F1F0
88 E8 7E C5 E4 2A D8 46 8A 05 EB E4 2A D9 01 FE -- 09F200
04 6A 50 EC 46 8D 16 50 E6 46 8D 16 A7 EB 04 45 -- 09F210
C9 C0 2B 0E C4 83 00 64 40 D0 9A 01 41 68 05 6A -- 09F220
46 C7 00 08 E0 46 C7 00 00 24 C8 57 56 CB 5E 5F -- 09F230
8B 05 FF DF 56 3E C5 2E 00 0F E4 46 C7 00 0E E2 -- 09F240
56 89 15 89 DF 56 3E C5 2E DF 50 3E F7 2E 99 05 -- 09F250
5C 1E 8E 2E DF 5A 3E 03 2E F8 8B 03 E6 46 6B E6 -- 09F260
03 2E F8 8B 03 E6 46 6B DF 46 88 E4 2A 05 8A DF -- 09F270
DE 46 88 E4 2A 01 45 8A DF 5C 1E 8E 2E DF 5A 3E -- 09F280
DF 5C 1E 8E 2E DF 5A 3E 03 2E F8 8B 03 E6 46 6B -- 09F290
EC 46 89 5A 16 F0 46 8D DD 46 88 E4 2A 02 45 8A -- 09F2A0
EC 46 83 E8 46 FF 07 EB 00 00 E8 46 C7 EE 56 89 -- 09F2B0
1F 16 FD 03 E7 D1 E8 7E 8B 3B 7D 03 E8 7E 83 05 -- 09F2C0
EC 7E C5 E4 2A DF 46 8A 05 88 EC 7E C5 E0 45 8B -- 09F2D0
46 8A 02 45 88 EC 7E C5 E4 2A DE 46 8A 01 45 88 -- 09F2E0
01 04 45 C6 EC 7E C5 03 45 88 EC 7E C5 E4 2A DD -- 09F2F0
05 6A 03 6A 50 F0 46 8D 16 50 EA 46 8D 16 B8 EB -- 09F300
5E 5F C9 C0 2B 0E C4 83 00 64 40 D0 9A 01 41 68 -- 09F310
05 8B 05 FF DF 5E 3E C5 2E 00 00 14 C8 57 56 CB -- 09F320
FC 56 89 15 89 DF 5E 3E C5 2E DF 50 3E F7 2E 99 -- 09F330
66 3E C5 2E 0F 74 00 08 3D 05 8B DF 62 3E C5 2E -- 09F340
00 00 FA 46 C7 01 62 E9 03 74 00 01 3D 05 8B DF -- 09F350
```

700

```
7E 83 01 C7 E9 03 75 02 FA 7E 83 FA 46 FF 03 EB -- 09F360
46 88 00 04 0D 05 8B DF 6A 3E C5 2E 1C 75 00 FA -- 09F370
1A EB F0 46 88 00 F4 0D 05 8B DF 6A 3E C5 2E F1 -- 09F380
3E C5 2E F1 46 88 00 04 0D 05 8B DF 6E 3E C5 2E -- 09F390
2B 50 FE 46 8D 16 F0 46 88 00 F4 0D 05 8B DF 6E -- 09F3A0
3E 03 2E F8 8B 03 FC 46 6B 50 E4 2A ED 46 88 C0 -- 09F3B0
E4 2A EE 46 88 E4 2A 05 8A DF 74 1E 8E 2E DF 72 -- 09F3C0
50 E4 2A F0 46 8A 50 E4 2A EF 46 88 00 10 B8 50 -- 09F3D0
2B 50 E4 2A F2 46 88 00 01 B8 50 E4 2A F1 46 8A -- 09F3E0
64 40 D0 9A 01 4F 68 09 6A 50 E4 2A F3 46 88 C0 -- 09F3F0
ED 46 88 C0 2B 50 FE 46 8D 16 16 C4 83 00 01 FE -- 09F400
8E 2E DF 72 3E 03 2E F8 8B 03 FC 46 6B 50 E4 2A -- 09F410
10 B8 50 E4 2A EE 46 88 E4 2A 01 45 8A DF 74 1E -- 09F420
F1 46 8A 50 E4 2A F0 46 8A 50 E4 2A EF 46 88 00 -- 09F430
46 88 C0 2B 50 E4 2A F2 46 88 00 02 B8 50 E4 2A -- 09F440
C4 83 00 64 40 D0 9A 01 4F 68 09 6A 50 E4 2A F3 -- 09F450

46 6B 50 E4 2A ED 46 88 C0 2B 50 FE 46 8D 16 16 -- 09F460
45 8A DF 74 1E 8E 2E DF 72 3E 03 2E F8 8B 03 FC -- 09F470
2A EF 46 88 00 10 B8 50 E4 2A EE 46 88 E4 2A 02 -- 09F480
03 B8 50 E4 2A F1 46 8A 50 E4 2A F0 46 8A 50 E4 -- 09F490
6A 50 E4 2A F3 46 88 C0 2B 50 E4 2A F2 46 88 00 -- 09F4A0
2B FE A5 E9 16 C4 83 00 64 40 D0 9A 01 4F 68 09 -- 09F4B0
FC 46 6B 07 F4 46 C6 F9 46 88 E4 2A F8 46 88 C0 -- 09F4C0
2A 05 8A DF 74 1E 8E 2E DF 72 3E 03 2E F8 8B 03 -- 09F4D0
2E DF 72 3E 03 2E F8 8B 03 FC 46 6B F5 46 88 E4 -- 09F4E0
03 FC 46 6B F6 46 88 E4 2A 01 45 8A DF 74 1E 8E -- 09F4F0
2A 02 45 8A DF 74 1E 8E 2E DF 72 3E 03 2E F8 8B -- 09F500
46 8A 50 F4 46 8D 16 50 FE 46 8D 16 F7 46 88 E4 -- 09F510
9A 01 32 68 06 6A 50 E4 2A F9 46 8A 50 E4 2A F8 -- 09F520
30 4A 00 CB 5E 5F C9 C0 2B 10 C4 83 00 64 40 D0 -- 09F530
00 6C 30 46 00 6C 2F FC 00 08 00 6C 30 44 00 6C -- 09F540
00 3C B3 24 00 3C 86 9A 00 6C 30 48 00 6C 30 14 -- 09F550
8B 55 57 56 00 6C 30 2C 00 3C 91 10 00 3C 91 0E -- 09F560
00 5C CD 78 9A 05 88 0A 7E C5 00 5C CD 78 9A EC -- 09F570
45 88 0A 7E C5 00 5C CD 78 9A 01 45 88 0A 7E C5 -- 09F580
5C CC 81 9A 03 45 88 0A 7E C5 00 5C CD 78 9A 02 -- 09F590
89 0A 7E C5 00 5C CC 81 9A 04 45 89 0A 7E C5 00 -- 09F5A0
CC 81 9A 08 45 89 0A 7E C5 00 5C CC 81 9A 06 45 -- 09F5B0
0A 7E C5 00 5C CC ED 9A 0A 45 89 0A 7E C5 00 5C -- 09F5C0
14 5D D9 9B 0A 7E C5 00 5C CC ED 9A 10 5D D9 9B -- 09F5D0
5C CC ED 9A 18 5D D9 9B 0A 7E C5 00 5C CC ED 9A -- 09F5E0
0A 7E C5 00 5C CC 81 9A 1C 5D D9 9B 0A 7E C5 00 -- 09F5F0
0E 45 89 0A 7E C5 00 5C CC 81 9A 0C 45 89 01 FE -- 09F600
5C CC ED 9A 20 5D D9 9B 0A 7E C5 00 5C CC ED 9A -- 09F610
0A 7E C5 00 5C CC ED 9A 24 5D D9 9B 0A 7E C5 00 -- 09F620
2C 5D D9 9B 0A 7E C5 00 5C CC ED 9A 28 5D D9 9B -- 09F630
00 5C CD 78 9A 30 45 88 0A 7E C5 00 5C CD 78 9A -- 09F640
45 88 0A 7E C5 00 5C CD 78 9A 31 45 88 0A 7E C5 -- 09F650
5E 5F C9 9B 33 45 88 0A 7E C5 00 5C CD 78 9A 32 -- 09F660
D9 9B 0A 7E C5 00 5C CC ED 9A EC 8B 55 57 56 CB -- 09F670
81 9A 14 5D D9 9B 0A 7E C5 00 5C CC ED 9A 10 5D -- 09F680
0A 7E C5 00 5C CC 81 9A 05 89 0A 7E C5 00 5C CC -- 09F690
9A 08 5D D9 9B 0A 7E C5 00 5C CC ED 9A 02 45 89 -- 09F6A0
00 5C CC 81 9A 0C 5D D9 9B 0A 7E C5 00 5C CC ED -- 09F6B0
45 89 0A 7E C5 00 5C CC 81 9A 04 45 89 0A 7E C5 -- 09F6C0
CC ED 9A 18 5D D9 9B 0A 7E C5 00 5C CC ED 9A 06 -- 09F6D0
7E C5 00 5C CC ED 9A 1C 5D D9 9B 0A 7E C5 00 5C -- 09F6E0
5D D9 9B 0A 7E C5 00 5C CC ED 9A 20 5D D9 9B 0A -- 09F6F0
3D 83 E3 CE 3E C5 2E 61 75 FF FF 3D 04 45 8B 24 -- 09F700
```

701

```
D8 9B 0A 7E C5 05 D9 9B E3 D2 3E C5 2E 24 74 00 -- 09F710
7E C5 05 D9 9B E3 D2 3E C5 2E 10 5D D9 9B 10 4D -- 09F720
99 9A 10 45 D9 9B 0A 7E C5 2F EB 14 4D D8 9B 0A -- 09F730
D9 9B 0A 7E C5 08 C4 83 00 64 54 18 9A 00 5C ED -- 09F740
00 64 54 18 9A 00 5C ED 99 9A 14 45 D9 9B 10 5D -- 09F750
56 CB 5E 5F C9 9B 14 5D D9 9B 0A 7E C5 08 C4 83 -- 09F760
83 00 5C DF 76 9A 50 CC 46 8D 16 00 00 34 C8 57 -- 09F770
C5 D2 46 8B 05 89 0E 7E C5 E4 2A CD 46 8A 04 C4 -- 09F780
3E C5 2E EC 8B 55 57 56 CB 5E 5F C9 05 89 0A 7E -- 09F790
8B 55 57 56 CB 5E 5F C9 C0 2B 00 01 05 C7 E3 CE -- 09F7A0
CB 5E 5F C9 C0 2B 00 00 05 C7 E3 CE 3E C5 2E EC -- 09F7B0
75 6D 0A 7E 83 06 74 4D 0A 7E 83 EC 8B 55 57 56 -- 09F7C0
2E E3 DE 06 DD 2E 9B 06 EB E3 D6 06 DD 2E 9B 08 -- 09F7D0
88 E3 E6 3E C5 2E 0A 46 8B 1D D9 9B E3 D2 3E C5 -- 09F7E0
46 DD 9B 1D D9 9B E3 EA 3E C5 2E 0C 46 DD 9B 05 -- 09F7F0

CB 5E 5F C9 9B 1D D9 9B E3 EE 3E C5 2E 14 01 FE -- 09F800
17 74 00 3D 83 E3 CE 3E C5 2E 00 00 08 C8 57 56 -- 09F810
5C CC ED 9A F8 5E D9 9B 05 D9 9B E3 D2 3E C5 2E -- 09F820
5E 5F C9 9B 00 5C CD 5D 9A 05 EB F8 4E D8 9B 00 -- 09F830
FF 2E 4D 05 C6 E3 E6 3E C5 2E EC 8B 55 57 56 CB -- 09F840
83 00 5C E3 31 9A 4D 6A E3 D2 36 FF 2E E3 D4 36 -- 09F850
3E C5 2E EC 8B 55 57 56 CB 5E 5F C9 C0 2B 06 C4 -- 09F860
6A E3 D2 36 FF 2E E3 D4 36 FF 2E 49 05 C6 E3 E6 -- 09F870
56 CB 5E 5F C9 C0 2B 06 C4 83 00 5C E3 31 9A 49 -- 09F880
D4 36 FF 2E 50 05 C6 E3 E6 3E C5 2E EC 8B 55 57 -- 09F890
06 C4 83 00 5C E3 31 9A 50 6A E3 D2 36 FF 2E E3 -- 09F8A0
E3 E6 3E C5 2E EC 8B 55 57 56 CB 5E 5F C9 C0 2B -- 09F8B0
9A 43 6A E3 D2 36 FF 2E E3 D4 36 FF 2E 43 05 C6 -- 09F8C0
55 57 56 CB 5E 5F C9 C0 2B 06 C4 83 00 5C E3 31 -- 09F8D0
2E E3 D4 36 FF 2E 44 05 C6 E3 E6 3E C5 2E EC 8B -- 09F8E0
C0 2B 06 C4 83 00 5C E3 31 9A 44 6A E3 D2 36 FF -- 09F8F0
05 C6 E3 E6 3E C5 2E EC 8B 55 57 56 CB 5E 5F C9 -- 09F900
E3 31 9A 54 6A E3 D2 36 FF 2E E3 D4 36 FF 2E 54 -- 09F910
00 08 C8 57 56 CB 5E 5F C9 C0 2B 06 C4 83 00 5C -- 09F920
00 43 2D 0A 46 8B 00 01 05 C7 E3 CE 3E C5 2E 00 -- 09F930
E3 A7 E3 54 A7 FF 2E D8 8B E0 D1 7E 77 00 11 3D -- 09F940
E3 C9 E3 C9 E3 80 E3 C9 E3 C9 E3 C9 E3 C9 E3 A0 -- 09F950
E3 C9 E3 C9 E3 C9 E3 99 E3 C9 E3 C9 E3 78 E3 C9 -- 09F960
E3 DE 06 DD 2E 9B 43 EB E3 D6 06 DD 2E 9B E3 88 -- 09F970
D8 26 9B E3 D6 06 DD 2E 9B E3 EA 36 C4 2E 3B EB -- 09F980
EB E3 EE 36 C4 2E 0C EB E3 EA 3E C5 2E 2A EB 34 -- 09F990
9B E3 F2 36 DC 2E 9B 05 D9 9B E3 EE 3E C5 2E E6 -- 09F9A0
0C 7E C5 F8 76 DC 9B E3 D6 06 DD 2E 9B F8 5E DD -- 09F9B0
00 6C 33 7A 00 6C 33 78 CB 5E 5F C9 9B 1D D9 9B -- 09F9C0
40 39 66 66 66 66 66 66 3F F0 00 00 00 00 00 00 -- 09F9D0
00 00 00 00 00 6C 33 82 00 6C 33 7E 00 6C 33 86 -- 09F9E0
C6 00 00 FE 46 C7 00 00 16 C8 57 56 40 28 00 00 -- 09F9F0
F5 46 C6 6D F4 46 C6 64 F3 46 C6 20 F2 46 01 FE -- 09FA00
F1 46 C6 78 F8 46 C6 62 F7 46 C6 6D F6 46 C6 61 -- 09FA10
56 00 02 50 45 C7 E8 3C 3E C5 2E 06 F2 46 C6 00 -- 09FA20
5C BF F8 9A 50 FE 46 8D 16 00 6A 02 6A 00 6A 57 -- 09FA30
16 74 00 FE 7E 83 05 89 E8 40 3E C5 2E 5E 5F 00 -- 09FA40
00 64 28 52 9A FE 76 FF 00 6A 00 6A 00 6A 00 6A -- 09FA50
00 00 EA 46 C7 00 0B FC 46 C7 01 5C E9 0A C4 83 -- 09FA60
5F 00 5C BF B8 9A 50 FE 46 8D 16 FC 76 FF 57 56 -- 09FA70
E8 46 1E 8E 2E E8 44 3E 03 2E E7 D1 EA 7E 8B 5E -- 09FA80
3E 03 2E E7 D1 EA 7E 8B B8 75 00 FE 7E 83 05 89 -- 09FA90
C1 EA 7E 8B 02 C4 83 00 64 5D 04 9A 35 FF E8 44 -- 09FAA0
55 89 05 89 E8 4A 1E 8E 2E E8 48 3E 03 2E 02 E7 -- 09FAB0
```

```
03 2E 02 E7 C1 EA 7E 8B 05 8B E8 40 3E C5 2E 02 -- 09FAC0
EA 7E 8B 02 45 89 3D C5 E8 4A 1E 8E 2E E8 48 3E -- 09FAD0
C7 3D C5 E8 4A 1E 8E 2E E8 48 3E 03 2E 02 E7 C1 -- 09FAE0
3E 03 2E 02 E7 C1 EA 46 FF EA 7E 8B 00 00 09 45 -- 09FAF0
06 03 2E 50 EA 46 6B 3D C5 E8 4A 1E 8E 2E E8 48 -- 09FB00
EA 7E 83 07 55 89 05 45 89 E8 3E 16 8B 2E E8 3C -- 09FB10
9A 50 FE 46 8D 16 03 6A 57 56 FF 4A E9 03 7D 02 -- 09FB20
E9 03 74 00 FE 7E 83 FA 46 89 5E 5F 00 5C C0 7A -- 09FB30
FE 46 8D 16 FF 6A 50 F2 46 8D 16 50 57 56 FF 0E -- 09FB40
83 05 89 E8 4C 3E C5 2E 5E 5F 00 5C C0 BA 9A 50 -- 09FB50
46 8D 16 50 FE 46 8D 16 FE E8 E9 03 74 00 FE 7E -- 09FB60
7E 83 0C C4 83 00 5C E6 1C 9A 00 6A 00 6A 50 EC -- 09FB70
50 3E C5 2E 05 8B EC 7E C5 FE C9 E9 03 74 00 FE -- 09FB80
C5 2E 24 7D 02 EA 7E 83 00 01 EA 46 C7 05 89 E8 -- 09FB90

2E 02 E7 C1 EA 7E 8B E4 2A 05 8A 3D C5 E8 48 3E -- 09FBA0
EA 46 FF 05 88 3D C5 E8 4A 1E 8E 2E E8 48 3E 03 -- 09FBB0
E8 54 3E C5 2E EC 8B 55 57 56 CB 5E 5F C9 D6 EB -- 09FBC0
55 8B 05 45 8B 3D C5 E8 48 3E C5 2E 00 00 05 C7 -- 09FBD0
58 3E C5 2E 0A 46 8B 02 55 89 05 89 0C 7E C5 07 -- 09FBE0
E8 40 3E C5 2E 57 56 1B 74 01 0A 7E 83 05 89 E8 -- 09FBF0
9A 10 76 FF 12 76 FF 50 48 0A 46 8B 35 FF 01 FE -- 09FC00
00 00 04 C8 57 56 CB 5E 5F C9 5E 5F 00 5C C1 3A -- 09FC10
2E E8 48 3E 03 2E 02 E7 C1 3D 8B E8 54 3E C5 2E -- 09FC20
54 3E C5 2E 01 45 88 0A 46 8B 3D C5 E8 4A 1E 8E -- 09FC30
E8 4A 1E 8E 2E E8 48 3E 03 2E 02 E7 C1 3D 8B E8 -- 09FC40
FF E8 4C 3E C5 2E 57 56 04 45 88 0C 46 8B 3D C5 -- 09FC50
2E E8 44 3E 03 2E E7 D1 3D 8B E8 54 3E C5 2E 35 -- 09FC60
14 76 FF 35 FF E8 40 3E C5 2E 35 FF E8 46 1E 8E -- 09FC70
00 3D 83 12 7E C5 5E 5F 00 5C C0 9A 9A 12 76 FF -- 09FC80
64 28 52 9A 35 FF 00 6A 00 6A 00 6A 00 6A 12 74 -- 09FC90
6A 01 6A 35 FF E8 40 3E C5 2E 57 56 0A C4 83 00 -- 09FCA0
46 89 5E 5F 00 5C C1 5A 9A 12 76 FF 14 76 FF FF -- 09FCB0
6A 00 6A 00 6A 00 6A 12 74 00 3D 83 12 7E C5 FE -- 09FCC0
74 01 0A 7E 83 0A C4 83 00 64 28 52 9A 35 FF 00 -- 09FCD0
54 3E C5 2E E8 58 36 C4 2E 17 75 03 0A 7E 83 06 -- 09FCE0
C5 2E 00 00 05 C7 04 75 04 3B 26 05 8B 05 FF E8 -- 09FCF0
1E 8E 2E E8 48 3E 03 2E 02 E7 C1 3D 8B E8 54 3E -- 09FD00
89 05 89 0E 7E C5 07 55 8B 05 45 8B 3D C5 E8 4A -- 09FD10
00 FE 46 C7 00 00 08 C8 57 56 CB 5E 5F C9 02 55 -- 09FD20
9A 05 6A 00 6A 50 FA 46 8D 16 50 FE 46 8D 16 00 -- 09FD30
3E C5 2E 5B 75 00 FE 7E 83 0C C4 83 00 5C E6 1C -- 09FD40
E8 40 3E C5 2E 57 56 29 7E 00 01 3D 05 8B E8 58 -- 09FD50
46 8D 16 FF 6A 50 48 05 8B E8 58 3E C5 2E 35 FF -- 09FD60
00 FE 7E 83 F8 46 89 5E 5F 00 5C C1 5A 9A 50 FE -- 09FD70
83 04 C4 83 00 5C E7 E3 9A 50 FE 46 8D 16 26 75 -- 09FD80
FE 76 FF 00 6A 00 6A 00 6A 00 6A 13 74 00 FE 7E -- 09FD90
04 C8 57 56 CB 5E 5F C9 0A C4 83 00 64 28 52 9A -- 09FDA0
6A 00 6A 50 FC 46 8D 16 0A 76 FF 0C 76 FF 00 00 -- 09FDB0
75 00 3D 83 0A 7E C5 0C C4 83 00 5C E6 1C 9A 06 -- 09FDC0
5E 5F C9 04 C4 83 00 5C E7 E3 9A 57 0C 76 FF 0C -- 09FDD0
35 FF E8 40 3E C5 2E 57 56 00 00 02 C8 57 56 CB -- 09FDE0
FE 46 C7 5E 5F 00 5C C0 18 9A 0A 76 FF 0C 76 FF -- 09FDF0
D1 FE 7E 8B 57 56 2D 7D 02 FE 7E 83 00 00 01 FE -- 09FE00
0C 76 FF 35 FF E8 46 1E 8E 2E E8 44 3E 03 2E E7 -- 09FE10
00 3D 83 0A 7E C5 5E 5F 00 5C BF D8 9A 0A 76 FF -- 09FE20
00 6C 29 52 00 CB 5E 5F C9 CD EB FE 46 FF 05 75 -- 09FE30
00 6C 29 44 00 6C 29 46 00 6C 29 4E 00 6C 29 42 -- 09FE40
14 C8 57 56 00 6C 29 3E 00 6C 29 40 00 6C 29 F2 -- 09FE50
10 FC 7E 83 00 00 FC 46 C7 00 00 FE 46 C7 00 00 -- 09FE60
```

```
FF EC 45 88 FC 46 8B FC 7E 03 1F 16 FD 8B 12 74 -- 09FE70
03 74 00 01 3D 05 8B EC 8C 3E C5 2E E8 EB FC 46 -- 09FE80
46 8D 16 4F 74 00 3D 83 EC 90 3E C5 2E 00 CD E9 -- 09FE90
98 36 FF 2E EC 9A 36 FF 2E 50 EC 46 8D 16 50 FE -- 09FEA0
0A 6A 00 6A 02 6A 35 FF EC 94 3E C5 2E 10 6A EC -- 09FEB0
50 FE 46 8D 16 18 C4 83 00 64 40 D0 9A 01 43 68 -- 09FEC0
6A EC A0 36 FF 2E EC A2 36 FF 2E 50 EC 46 8D 16 -- 09FED0
A4 3E C5 2E 59 EB 00 6A 35 FF EC 9C 3E C5 2E 10 -- 09FEE0
46 8D 16 50 FE 46 8D 16 5C 75 00 02 3D 05 8B EC -- 09FEF0
C5 2E 10 6A EC 98 36 FF 2E EC 9A 36 FF 2E 50 EC -- 09FF00
D0 9A 01 43 68 0A 6A 00 6A 02 6A 35 FF EC 94 3E -- 09FF10
50 EC 46 8D 16 50 FE 46 8D 16 18 C4 83 00 64 40 -- 09FF20
9C 3E C5 2E 10 6A EC A0 36 FF 2E EC A2 36 FF 2E -- 09FF30

64 40 D0 9A 01 43 68 0A 6A 00 6A 03 6A 35 FF EC -- 09FF40
00 CA E9 00 02 05 C7 EC 8C 3E C5 2E 18 C4 83 00 -- 09FF50
16 50 FE 46 8D 16 4F 74 00 3D 83 EC 90 3E C5 2E -- 09FF60
10 6A EC A0 36 FF 2E EC A2 36 FF 2E 50 EC 46 8D -- 09FF70
01 43 68 0A 6A 00 6A 02 6A 35 FF EC 9C 3E C5 2E -- 09FF80
46 8D 16 50 FE 46 8D 16 18 C4 83 00 64 40 D0 9A -- 09FF90
C5 2E 10 6A EC 98 36 FF 2E EC 9A 36 FF 2E 50 EC -- 09FFA0
05 8B EC A4 3E C5 2E 59 EB 00 6A 35 FF EC 94 3E -- 09FFB0
2E 50 EC 46 8D 16 50 FE 46 8D 16 5C 75 00 02 3D -- 09FFC0
EC 9C 3E C5 2E 10 6A EC A0 36 FF 2E EC A2 36 FF -- 09FFD0
00 64 40 D0 9A 01 43 68 0A 6A 00 6A 02 6A 35 FF -- 09FFE0
36 FF 2E 50 EC 46 8D 16 50 FE 46 8D 16 18 C4 83 -- 09FFF0
EC 94 3E C5 2E 10 6A EC 98 36 FF 2E EC 9A 01 FE -- 0A0000
00 64 40 D0 9A 01 43 68 0A 6A 00 6A 03 6A 35 FF -- 0A0010
00 FE 7E 83 00 01 05 C7 EC 8C 3E C5 2E 18 C4 83 -- 0A0020
5E 5F C9 02 C4 83 00 64 59 DC 9A FE 76 FF 0B 74 -- 0A0030
10 96 7E 83 00 00 96 46 C7 00 00 7C C8 57 56 CB -- 0A0040
FF 84 45 88 96 46 8B 96 7E 03 1F 16 FD 8B 12 74 -- 0A0050
C4 83 00 5C D0 B3 9A 50 9C 46 8D 16 E8 EB 96 46 -- 0A0060
00 98 46 C7 9B 46 88 00 7F 25 E4 2A E2 46 8A 04 -- 0A0070
2E E7 D1 F8 8B E4 2A 9B 46 8A EC 8C 36 C4 2E 00 -- 0A0080
03 74 04 3B 26 05 8B EC AA 1E 8E 2E EC A8 3E 03 -- 0A0090
46 8D 16 50 98 46 8D 16 00 01 94 46 C7 01 7C E9 -- 0A00A0
01 A6 E9 02 6A 01 6A 10 6A 50 9B 46 8D 16 50 84 -- 0A00B0
EB 00 01 B8 05 75 00 01 3D 05 8B EC 8C 3E C5 2E -- 0A00C0
01 BE 05 75 00 94 7E 83 27 75 94 46 23 C0 2B 02 -- 0A00D0
75 00 02 3D 05 8B EC 8C 3E C5 2E F6 2B 02 EB 00 -- 0A00E0
8A 00 91 E9 03 75 C6 23 C0 2B 02 EB 00 01 B8 05 -- 0A00F0
1E 8E 2E EC A8 3E 03 2E E7 D1 F8 8B E4 2A 9B 46 -- 0A0100
EC 94 3E C5 2E 00 00 96 46 C7 00 02 05 C7 EC AA -- 0A0110
05 8A F8 03 EC 98 3E C5 2E 5F 7D 05 3B 96 46 8B -- 0A0120
26 3C 8B 26 EC 9C 36 C4 2E 4A 75 9B 46 3A E4 2A -- 0A0130
2A 9B 46 8A EC A2 1E 8E 2E EC A0 3E 03 2E 04 FF -- 0A0140
21 74 96 46 3B 48 05 8B EC 94 3E C5 2E 05 88 E4 -- 0A0150
05 8A EC 9A 1E 8E 2E EC 98 3E 03 2E 47 96 7E 8B -- 0A0160
EB 96 46 FF 05 88 96 7E 03 EC 98 3E 8B 2E E4 2A -- 0A0170
00 F9 E9 0D FF EC 94 3E C5 2E 95 EB 96 46 FF D2 -- 0A0180
8E 2E EC A8 3E 03 2E E7 D1 F8 8B E4 2A 9B 46 8A -- 0A0190
9C 3E C5 2E 00 00 96 46 C7 00 01 05 C7 EC AA 1E -- 0A01A0
8A F8 03 EC A0 3E C5 2E 5F 7D 05 3B 96 46 8B EC -- 0A01B0
3C 8B 26 EC 94 36 C4 2E 4A 75 9B 46 3A E4 2A 05 -- 0A01C0
9B 46 8A EC 9A 1E 8E 2E EC 98 3E 03 2E 04 FF 26 -- 0A01D0
74 96 46 3B 48 05 8B EC 9C 3E C5 2E 05 88 E4 2A -- 0A01E0
8A EC A2 1E 8E 2E EC A0 3E 03 2E 47 96 7E 8B 21 -- 0A01F0
FF 05 88 96 7E 03 EC A0 3E 8B 2E E4 2A 05 01 FE -- 0A0200
6C E9 EC 9C 3E C5 2E 95 EB 96 46 FF D2 EB 96 46 -- 0A0210
```

704

```
17  74  00  3D  83  EC  90  3E  C5  2E  00  00  94  46  C7  FF  --  0A0220
6A  50  9B  46  8D  16  50  84  46  8D  16  50  98  46  8D  16  --  0A0230
02  3D  05  8B  EC  A4  3E  C5  2E  21  EB  00  6A  01  6A  10  --  0A0240
46  8D  16  50  84  46  8D  16  50  98  46  8D  16  24  75  00  --  0A0250
9A  01  43  68  0A  6A  00  6A  03  6A  01  6A  10  6A  50  9B  --  0A0260
FE  42  E9  03  75  00  98  7E  83  18  C4  83  00  64  40  D0  --  0A0270
00  CB  5E  5F  C9  02  C4  83  00  2C  69  97  9A  98  76  FF  --  0A0280
00  3C  B3  2A  00  3C  B3  14  00  3C  91  12  00  24  77  8E  --  0A0290
00  3C  AF  10  00  3C  86  9A  00  3C  B4  2A  00  3C  B3  16  --  0A02A0
55  18  AA  3E  81  5F  73  1D  18  30  3E  83  FF  FE  E4  81  --  0A02B0
5C  BD  92  9A  18  2E  68  1E  18  AA  36  FF  1E  57  77  19  --  0A02C0
AA  3E  8B  DB  03  DB  03  18  30  1E  8B  19  A6  06  86  00  --  0A02D0

07  1E  01  75  8D  0D  8A  18  34  9F  8C  18  32  BF  89  18  --  0A02E0
3C  06  72  41  3C  AC  0E  E3  ED  2A  AA  01  74  20  3C  FC  --  0A02F0
FF  18  AA  3E  89  AA  C0  2A  F2  E2  AA  20  04  02  77  5A  --  0A0300
DB  03  18  30  1E  8B  9A  75  0D  19  A6  3E  80  18  30  06  --  0A0310
ED  2B  00  00  18  34  87  C7  00  00  18  32  87  C7  DB  03  --  0A0320
1E  18  32  68  1E  1E  D8  8E  00  6C  B8  00  64  4C  EE  9A  --  0A0330
00  6A  00  6A  1F  08  C4  83  00  64  2C  6C  9A  18  30  68  --  0A0340
0A  C4  83  00  64  45  2C  9A  18  30  36  FF  18  32  68  1E  --  0A0350
00  5C  BD  72  9A  01  6A  02  C4  83  00  64  56  DE  9A  50  --  0A0360
C4  0E  76  C5  09  E3  12  4E  8B  EC  8B  55  57  56  00  F4  --  0A0370
00  CB  5E  5F  C9  0C  56  8B  0A  46  8B  A4  F3  FC  0A  7E  --  0A0380
83  5A  58  CB  9E  E0  DF  9B  E4  D9  00  02  07  FF  0F  BF  --  0A0390
46  DF  EC  8B  55  CB  9B  50  52  1F  DD  36  DC  8B  08  EC  --  0A03A0
FE  46  C7  FC  46  89  06  46  8B  00  00  04  C8  CB  5D  06  --  0A03B0
C8  CB  5D  06  46  DB  EC  8B  55  CB  C9  FC  46  DB  00  00  --  0A03C0
C7  FA  46  89  08  46  8B  F8  46  89  06  46  8B  00  00  08  --  0A03D0
04  C8  CB  C9  F8  6E  DF  00  00  FE  46  C7  00  00  FC  46  --  0A03E0
00  04  C8  CB  C9  FC  46  D9  FC  5E  D9  06  46  DD  00  00  --  0A03F0
DF  06  46  DD  ED  8C  2E  D9  2E  FE  7E  D9  9B  00  01  FE  --  0A0400
D9  9B  00  00  06  C8  CB  C9  FC  46  8B  FE  6E  D9  FC  5E  --  0A0410
FE  6E  D9  FA  5E  DB  06  46  DD  ED  8C  2E  D9  2E  FE  7E  --  0A0420
2E  D9  2E  FE  7E  D9  9B  00  00  06  C8  CB  C9  FA  46  8B  --  0A0430
56  8B  FA  46  8B  FE  6E  D9  FA  5E  DB  06  46  DD  ED  8C  --  0A0440
ED  8C  2E  D9  2E  FE  7E  D9  9B  00  00  0A  C8  CB  C9  FC  --  0A0450
C9  F8  56  8B  F6  46  8B  FE  6E  D9  F6  7E  DF  06  46  DD  --  0A0460
CB  C9  FC  46  D9  FC  5E  D9  06  46  DD  00  00  04  C8  CB  --  0A0470
55  CB  5D  D9  DD  FD  D9  06  46  DD  0E  46  DF  EC  8B  55  --  0A0480
DF  2E  0B  74  00  5C  ED  92  9A  F4  D9  06  46  DD  EC  8B  --  0A0490
DF  26  0E  5E  C4  C9  D9  C2  DE  E8  D9  F9  DE  ED  90  06  --  0A04A0
8E  2E  D9  2E  FE  7E  D9  9B  00  00  02  C8  CB  5D  9B  1F  --  0A04B0
1F  DD  26  0E  5E  C4  E9  DC  FC  D9  C0  D9  06  46  DD  ED  --  0A04C0
E9  EF  D0  B8  01  86  E9  EF  D0  B8  00  CB  C9  FE  6E  D9  --  0A04D0
C3  8B  01  82  E9  EE  F2  B8  01  7F  E9  EE  F2  B8  01  89  --  0A04E0
DC  8B  C3  8B  C0  8E  D0  8C  0B  EB  08  5F  C4  36  DC  8B  --  0A04F0
8B  27  F7  26  0A  46  8B  50  EC  8B  55  57  56  08  5F  8D  --  0A0500
26  0C  46  8B  F0  03  02  67  F7  26  0A  46  8B  F8  8B  F2  --  0A0510
5A  58  00  CB  5E  5F  C9  5B  C7  8B  D6  8B  F0  03  27  F7  --  0A0520
04  47  89  26  02  67  89  26  2F  89  26  1F  C4  36  DC  8B  --  0A0530
08  47  8B  36  DC  8B  04  6F  FF  26  C0  2B  06  57  89  26  --  0A0540
0B  00  6E  8B  0C  74  00  4E  3B  0F  8B  26  04  5F  C4  36  --  0A0550
26  02  67  8B  26  5E  5F  C9  90  04  EB  E9  8B  F4  75  ED  --  0A0560
00  F0  E9  EF  84  B8  00  ED  E9  EF  84  B8  00  04  6F  FF  --  0A0570
C3  8B  C0  8E  D0  8C  0B  EB  08  5F  C4  36  DC  8B  C3  8B  --  0A0580
46  8B  0C  56  8B  50  EC  8B  55  57  56  08  5F  8D  DC  8B  --  0A0590
D6  D1  D7  D1  D2  D1  E0  D1  00  20  B9  FF  2B  F6  2B  0A  --  0A05A0
3F  2B  26  08  72  3F  3B  26  05  77  0F  72  02  77  3B  26  --  0A05B0
DC  8B  C3  8B  CB  5E  5F  C9  5B  E1  E2  40  02  77  1B  26  --  0A05C0
```

705

```
5F  8D  DC  8B  C3  8B  C0  8E  D0  8C  0B  EB  08  5F  C4  36  --  0A05D0
2B  D2  2B  0A  7E  8B  0C  76  8B  50  EC  8B  55  57  56  08  --  0A05E0
02  57  3B  26  D2  D1  D0  D1  D6  D1  E7  D1  00  20  B9  C0  --  0A05F0
1B  26  07  2B  26  07  72  07  3B  26  05  77  0E  72  01  FE  --  0A0600
06  46  DD  EC  8B  55  00  CB  5E  5F  C9  5B  E2  E2  02  57  --  0A0610
0C  02  74  40  A8  47  24  C4  8A  D8  DD  E0  DF  9B  E5  D9  --  0A0620
D9  D8  8E  00  6C  B8  EC  8B  55  1E  CB  5D  00  0F  25  08  --  0A0630
DF  40  D9  F7  03  79  C9  0B  C0  2B  1B  E3  08  4E  8B  E8  --  0A0640
02  3E  DE  04  74  C0  0B  D8  DD  FC  E2  C9  DC  34  04  06  --  0A0650
80  01  BA  08  EB  D2  2B  0C  EB  00  01  BA  CB  1F  5D  34  --  0A0660
0E  FA  8B  D8  8B  53  EC  8B  55  57  56  80  00  BA  03  EB  --  0A0670

8B  26  02  57  8B  26  0E  5E  C4  0C  79  FF  0B  F6  2B  53  --  0A0680
F7  DA  F7  0C  79  D2  0B  0E  46  8B  10  56  8B  06  EB  07  --  0A0690
46  8B  0C  56  8B  50  52  46  01  72  EF  D1  00  DA  83  D8  --  0A06A0
FF  50  52  46  00  DA  83  D8  F7  DA  F7  08  79  D2  0B  0A  --  0A06B0
00  DA  83  D8  F7  DA  F7  07  73  EE  D1  0C  C4  83  FA  5E  --  0A06C0
01  FE  46  C7  00  00  02  C8  57  56  00  CB  5E  5F  C9  5B  --  0A06D0
6A  00  6A  1D  7E  00  05  3D  05  8B  F4  A4  3E  C5  2E  00  --  0A06E0
0A  C4  83  00  64  28  52  9A  50  74  68  01  6A  00  6A  00  --  0A06F0
5E  5F  C9  FE  46  8B  00  02  FE  46  C7  05  75  00  02  3D  --  0A0700
0E  76  FF  10  76  FF  12  76  FF  00  00  02  C8  57  56  CB  --  0A0710
7E  C5  0A  C4  83  00  1C  13  88  9A  0A  76  FF  0C  76  FF  --  0A0720
18  76  FF  1A  76  FF  1C  76  FF  1E  76  FF  46  75  FF  10  --  0A0730
46  89  0E  C4  83  00  1C  0E  4C  9A  14  76  FF  16  76  FF  --  0A0740
F4  AA  36  FF  2E  F4  AC  36  FF  2E  F4  AE  36  FF  2E  FE  --  0A0750
0A  46  8B  08  C4  83  00  1C  18  C6  9A  F4  A8  36  FF  2E  --  0A0760
2E  1A  6A  02  55  89  05  89  F4  B0  3E  C5  2E  0C  56  8B  --  0A0770
00  5C  ED  6E  9A  20  76  FF  22  76  FF  57  F4  B2  36  FF  --  0A0780
00  00  12  C8  57  56  CB  5E  5F  C9  FE  46  8B  0A  C4  83  --  0A0790
7D  00  03  3D  05  89  0A  7E  C5  05  8B  F4  A4  3E  C5  2E  --  0A07A0
74  C0  0B  EE  46  89  00  34  3B  2F  9A  6D  EB  C0  2B  04  --  0A07B0
8D  16  0E  76  FF  10  76  FF  4B  EB  50  00  EE  46  81  07  --  0A07C0
2E  F0  46  D9  9B  08  C4  83  00  54  BE  C0  9A  50  F0  46  --  0A07D0
F4  B8  3E  C5  2E  F4  46  D9  9B  1D  D9  9B  F4  B4  3E  C5  --  0A07E0
F4  BC  3E  C5  2E  FC  46  D8  9B  F0  46  D9  9B  1D  D9  9B  --  0A07F0
3E  C5  2E  F8  46  D8  9B  F4  46  D9  9B  1D  D9  9B  01  FE  --  0A0800
89  0A  7E  C5  05  8B  F4  A4  3E  C5  2E  1D  D9  9B  F4  C0  --  0A0810
19  9A  EC  8B  55  57  56  CB  5E  5F  C9  9B  EE  46  8B  05  --  0A0820
5E  5F  C9  00  34  42  F0  9A  00  54  D9  92  9A  00  34  4A  --  0A0830
C5  2E  0A  76  FF  0C  76  FF  57  56  EC  8B  55  57  56  CB  --  0A0840
C1  05  8B  F4  A4  3E  C5  2E  35  FF  02  75  FF  F4  C4  3E  --  0A0850
FF  10  76  FF  57  56  5E  5F  00  5C  FE  EC  9A  50  02  E0  --  0A0860
A4  3E  C5  2E  35  FF  02  75  FF  F4  C8  3E  C5  2E  0E  76  --  0A0870
57  56  5E  5F  00  5C  FE  EC  9A  50  02  E0  C1  05  8B  F4  --  0A0880
35  FF  02  75  FF  F4  CC  3E  C5  2E  12  76  FF  14  76  FF  --  0A0890
54  9A  5E  5F  00  5C  FE  EC  9A  35  FF  F4  A4  3E  C5  2E  --  0A08A0
5E  5F  C9  00  34  3A  98  9A  00  54  C3  E8  9A  00  1C  19  --  0A08B0
F8  46  89  46  45  8B  0E  7E  C5  00  00  08  C8  57  56  CB  --  0A08C0
0B  06  C4  83  00  54  BE  64  9A  1A  76  FF  1C  76  FF  50  --  0A08D0
7E  C5  00  00  46  45  C7  0E  7E  C5  01  2C  E9  03  75  C0  --  0A08E0
01  B8  05  74  00  FA  7E  83  FA  46  89  E4  2A  05  8A  1A  --  0A08F0
00  FC  46  C7  49  45  88  0E  7E  C5  00  02  B8  03  EB  00  --  0A0900
BB  E9  03  7C  F8  46  3B  FE  46  8B  00  00  FE  46  C7  00  --  0A0910
E9  03  74  00  FA  7E  83  5A  74  00  3D  80  1A  7E  C5  00  --  0A0920
50  52  18  56  8B  16  46  03  02  E0  C1  FC  46  8B  00  9B  --  0A0930
76  FF  50  52  14  56  8B  12  46  03  02  E0  C1  FC  46  8B  --  0A0940
F4  4B  9A  0A  76  FF  0C  76  FF  1E  76  FF  0E  76  FF  10  --  0A0950
49  45  C6  0E  7E  C5  00  00  1E  46  C7  12  C4  83  00  5C  --  0A0960
46  89  FE  46  8B  00  01  46  45  C7  00  01  FA  46  C7  03  --  0A0970
```

```
03  02  E0  C1  FC  46  8B  44  74  00  FA  7E  83  50  EB  FC  --  0A0980
12  46  03  02  E0  C1  FC  46  8B  50  52  18  56  8B  16  46  --  0A0990
76  FF  1E  76  FF  0E  76  FF  10  76  FF  50  52  14  56  8B  --  0A09A0
C6  0E  7E  C5  12  C4  83  00  5C  F4  4B  9A  0A  76  FF  0C  --  0A09B0
0E  7E  C5  A9  EB  FA  46  89  1E  46  89  C0  2B  04  49  45  --  0A09C0
00  FA  7E  83  FF  3A  E9  1A  46  FF  FE  46  FF  46  45  FF  --  0A09D0
49  45  88  0E  7E  C5  00  06  B8  03  EB  00  05  B8  05  74  --  0A09E0
46  8B  50  52  18  56  8B  16  46  03  02  E0  C1  FC  46  8B  --  0A09F0
76  FF  50  52  14  56  8B  12  46  03  02  E0  C1  FC  01  FE  --  0A0A00
12  76  FF  14  76  FF  16  76  FF  18  76  FF  12  EB  57  10  --  0A0A10

9A  0A  76  FF  0C  76  FF  1E  76  FF  0E  76  FF  10  76  FF  --  0A0A20
CB  5E  5F  C9  00  54  C4  5E  9A  12  C4  83  00  5C  F4  4B  --  0A0A30
00  5C  E0  79  9A  0A  76  FF  0C  76  FF  EC  8B  55  57  56  --  0A0A40
00  0E  7E  83  EC  8B  55  57  56  CB  5E  5F  C9  04  C4  83  --  0A0A50
18  76  FF  1A  76  FF  00  6A  00  6A  00  6A  00  6A  2A  74  --  0A0A60
FF  0C  76  FF  10  76  FF  12  76  FF  14  76  FF  16  76  FF  --  0A0A70
FF  1A  76  FF  20  EB  18  C4  83  00  5C  47  C8  9A  0A  76  --  0A0A80
76  FF  10  76  FF  12  76  FF  14  76  FF  16  76  FF  18  76  --  0A0A90
CB  5E  5F  C9  10  C4  83  00  5C  47  DB  9A  0A  76  FF  0C  --  0A0AA0
00  6C  32  E4  00  6C  32  FC  00  6C  32  FA  00  3C  ED  70  --  0A0AB0
00  6C  32  F6  00  6C  32  EE  00  6C  32  F2  00  6C  32  EA  --  0A0AC0
14  C8  57  56  00  3C  F0  EC  00  3C  F0  F0  00  3C  ED  64  --  0A0AD0
AC  36  FF  2E  07  80  F2  46  C7  00  80  F4  46  C7  00  00  --  0A0AE0
64  07  9A  9A  0A  76  FF  0C  76  FF  F8  AA  36  FF  2E  F8  --  0A0AF0
FF  B8  06  75  C2  0B  EE  56  89  EC  46  89  08  C4  83  00  --  0A0B00
EC  76  FF  EE  76  FF  00  6A  00  6A  00  6A  01  1C  E9  FF  --  0A0B10
46  03  09  E0  C1  0E  46  8B  0A  C4  83  00  64  46  EA  9A  --  0A0B20
50  01  6A  EC  76  FF  EE  76  FF  FA  46  89  F2  46  03  F4  --  0A0B30
83  00  64  58  22  9A  F8  AE  36  FF  2E  F8  B0  36  FF  2E  --  0A0B40
CF  E9  FF  FE  B8  06  74  01  F6  7E  83  F6  46  89  0C  C4  --  0A0B50
46  8B  F0  46  89  E4  2A  13  45  8A  F8  AE  3E  C5  2E  00  --  0A0B60
AE  3E  C5  2E  00  B4  E9  FF  FD  B8  06  7E  F0  46  3B  10  --  0A0B70
9F  E9  FF  FC  B8  06  73  0E  46  3B  E4  2A  0C  45  8A  F8  --  0A0B80
8B  00  01  FC  46  C7  F8  46  89  10  46  2B  F0  46  8B  00  --  0A0B90
08  E0  C1  0E  46  8B  FC  46  89  E0  D3  F8  4E  8B  FC  46  --  0A0BA0
46  C7  36  75  00  16  7E  83  3F  C0  F8  46  C7  FA  46  89  --  0A0BB0
E7  D1  FE  7E  8B  63  7D  FA  46  3B  FE  46  8B  00  00  FE  --  0A0BC0
F7  99  08  00  85  8B  F8  B0  1E  8E  2E  F8  AE  3E  03  2E  --  0A0BD0
FF  05  89  14  5E  8E  12  7E  03  E7  D1  FE  7E  8B  FC  7E  --  0A0BE0
7D  FA  46  3B  FE  46  8B  00  00  FE  46  C7  CF  EB  FE  46  --  0A0BF0
76  8B  14  5E  8E  12  7E  03  E7  D1  FE  7E  8B  2D  01  FE  --  0A0C00
F8  46  8B  F8  B0  06  8E  2E  F8  AE  36  03  2E  E6  D1  FE  --  0A0C10
CB  EB  FE  46  FF  05  89  FC  7E  F7  99  08  00  84  2B  26  --  0A0C20
00  0A  7E  83  00  00  10  C8  57  56  CB  5E  5F  C9  C0  2B  --  0A0C30
46  89  10  56  8B  0E  46  8B  61  75  01  0C  7E  83  67  75  --  0A0C40
FA  56  89  F8  46  89  14  56  8B  12  46  8B  FE  56  89  FC  --  0A0C50
16  46  3B  F2  46  8B  00  00  F2  46  C7  00  40  F0  46  C7  --  0A0C60
D9  9B  FE  5E  8E  FC  7E  03  02  E7  C1  F2  7E  8B  32  7D  --  0A0C70
83  00  5C  ED  F9  9A  00  5C  ED  99  9A  F0  4E  DE  9B  05  --  0A0C80
FF  05  89  FA  5E  8E  F8  7E  03  E7  D1  F2  7E  8B  08  C4  --  0A0C90
83  5F  75  00  0A  7E  83  02  09  E9  C0  2B  C6  EB  F2  46  --  0A0CA0
56  89  FC  46  89  10  56  8B  0E  46  8B  59  75  02  0C  7E  --  0A0CB0
F2  46  C7  F6  56  89  F4  46  89  14  56  8B  12  46  8B  FE  --  0A0CC0
02  E7  C1  F2  7E  8B  CA  7D  16  46  3B  F2  46  8B  00  00  --  0A0CD0
9A  F8  B2  06  DC  2E  9B  05  D9  9B  FE  5E  8E  FC  7E  03  --  0A0CE0
D1  F2  7E  8B  08  C4  83  00  5C  ED  F9  9A  00  5C  ED  99  --  0A0CF0
7E  83  C4  EB  F2  46  FF  05  89  F6  5E  8E  F4  7E  03  E7  --  0A0D00
10  56  8B  0E  46  8B  55  75  02  0C  7E  83  5B  75  01  0A  --  0A0D10
89  F4  46  89  14  56  8B  12  46  8B  FA  56  89  F8  46  89  --  0A0D20
```

```
3B F2 46 8B 00 00 F2 46 C7 00 40 F0 46 C7 F6 56 -- 0A0D30
8E F8 7E 03 E7 D1 F2 7E 8B FF 5D E9 03 7C 16 46 -- 0A0D40
F2 7E 8B 06 F8 C1 00 20 05 3F FF 25 05 8B FA 5E -- 0A0D50
83 CD EB F2 46 FF 05 89 F6 5E 8E F4 7E 03 E7 D1 -- 0A0D60
56 8B 0E 46 8B 67 75 01 0C 7E 83 6D 75 02 0A 7E -- 0A0D70
F8 46 89 14 56 8B 12 46 8B F6 56 89 F4 46 89 10 -- 0A0D80
F2 46 8B 00 00 F2 46 C7 00 40 F0 46 C7 FA 56 89 -- 0A0D90
F4 7E 03 E7 D1 F2 7E 8B FE FC E9 03 7C 16 46 3B -- 0A0DA0
FA 5E 8E F8 7E 03 E7 D1 F2 7E 8B 05 8B F6 5E 8E -- 0A0DB0

03 E6 D1 F2 76 8B F8 7E 03 E7 D1 F2 7E 8B 05 89 -- 0A0DC0
F2 46 FF 05 89 2C F7 26 F0 46 8B FA 46 8E F8 76 -- 0A0DD0
46 8B 6B 75 00 0C 7E 83 71 75 01 0A 7E 83 BB EB -- 0A0DE0
14 56 8B 12 46 8B FA 56 89 F8 46 89 10 56 8B 0E -- 0A0DF0
F2 46 C7 00 40 F0 46 C7 FE 56 89 FC 46 89 01 FE -- 0A0E00
F2 7E 8B FE 89 E9 03 7C 16 46 3B F2 46 8B 00 00 -- 0A0E10
E7 C1 F2 7E 8B 05 DF 9B FA 5E 8E F8 7E 03 E7 D1 -- 0A0E20
02 E7 C1 F2 7E 8B 1D D9 9B FE 5E 8E FC 7E 03 02 -- 0A0E30
02 E7 C1 F2 7E 8B F0 76 DE 9B 05 D9 9B FC 7E 03 -- 0A0E40
75 02 0A 7E 83 B7 EB F2 46 FF 1D D9 9B FC 7E 03 -- 0A0E50
F4 46 89 10 56 8B 0E 46 8B 4A 75 00 0C 7E 83 50 -- 0A0E60
C7 FE 56 89 FC 46 89 14 56 8B 12 46 8B F6 56 89 -- 0A0E70
8B FE 17 E9 03 7C 16 46 3B F2 46 8B 00 00 F2 46 -- 0A0E80
F2 7E 8B 05 DF 9B F6 5E 8E F4 7E 03 E7 D1 F2 7E -- 0A0E90
EB F2 46 FF 1D D9 9B FE 5E 8E FC 7E 03 02 E7 C1 -- 0A0EA0
DC 70 00 24 DC 6C 00 CB 5E 5F C9 9B FF FF B8 D3 -- 0A0EB0
00 00 0C C8 57 56 3F E0 00 00 00 00 00 00 00 24 -- 0A0EC0
9A 50 F4 46 8D 16 FC 50 36 FF 2E FC 52 36 FF 2E -- 0A0ED0
74 00 3D 83 FC 54 3E C5 2E 08 C4 83 00 64 5B B4 -- 0A0EE0
50 F4 46 8D 16 66 74 00 3D 83 FC 58 3E C5 2E 70 -- 0A0EF0
2E FC 62 36 FF 2E 06 C4 83 00 5C D0 03 9A 0A 6A -- 0A0F00
20 9A FC 5C 36 FF 2E FC 5E 36 FF 2E FC 60 36 FF -- 0A0F10
2E FC 66 36 FF 2E 20 75 C0 0B 08 C4 83 00 64 5A -- 0A0F20
C4 83 00 64 5A 20 9A 50 F4 46 8D 16 FC 64 36 FF -- 0A0F30
2E 50 F4 46 8D 16 00 44 C4 06 9A 05 75 C0 0B 08 -- 0A0F40
C4 83 00 64 5B B4 9A FC 5C 36 FF 2E FC 5E 36 FF -- 0A0F50
00 5C 57 D5 9A 0A 74 00 3D 83 FC 68 3E C5 2E 08 -- 0A0F60
16 38 75 00 3D 83 FC 6C 3E C5 2E 01 52 E9 C0 2B -- 0A0F70
FF 2E FC 70 36 FF 2E FC 72 36 FF 2E 50 FE 46 8D -- 0A0F80
2A 05 8A FC 70 3E C5 2E FC 70 36 FF 2E FC 72 36 -- 0A0F90
F5 E9 05 6A 50 E4 2A 05 8A 50 E4 2A 05 8A 50 E4 -- 0A0FA0
74 00 3D 83 FC 54 3E C5 2E 01 10 E9 FE 46 8B 00 -- 0A0FB0
FC 74 3E C5 2E 68 75 00 3D 83 FC 58 3E C5 2E 72 -- 0A0FC0
2E FC 82 36 FF 2E 50 FE 46 8D 16 5E 75 00 3D 83 -- 0A0FD0
10 6A FC 7C 36 FF 2E FC 7E 36 FF 2E FC 80 36 FF -- 0A0FE0
01 43 68 0A 6A 00 6A 03 6A 35 FF FC 78 3E C5 2E -- 0A0FF0
03 74 00 FE 7E 83 18 C4 83 00 64 40 D0 9A 01 FE -- 0A1000
36 FF 2E FC 82 36 FF 2E 50 FE 46 8D 16 00 AB E9 -- 0A1010
C5 2E 10 6A FC 88 36 FF 2E FC 8A 36 FF 2E FC 80 -- 0A1020
2E 37 74 00 3D 83 FC 54 3E C5 2E 6D EB FC 84 3E -- 0A1030
3D 83 FC 8C 3E C5 2E 2D 74 00 3D 83 FC 58 3E C5 -- 0A1040
46 8D 16 FC 90 36 FF 2E FC 92 36 FF 2E 23 74 00 -- 0A1050
EC 9A 08 75 C0 0B 08 C4 83 00 64 5A 20 9A 50 F4 -- 0A1060
00 01 3D 05 8B FC 94 3E C5 2E FF 3D E9 00 44 C3 -- 0A1070
80 36 FF 2E FC 82 36 FF 2E 50 FE 46 8D 16 91 74 -- 0A1080
3E C5 2E 10 6A FC 7C 36 FF 2E FC 7E 36 FF 2E FC -- 0A1090
40 D0 9A 01 43 68 0A 6A 00 6A 03 6A 35 FF FC 78 -- 0A10A0
76 FF FE F5 E9 03 75 00 FE 7E 83 18 C4 83 00 64 -- 0A10B0
C8 57 56 CB 5E 5F C9 02 C4 83 00 2C D0 F8 9A FE -- 0A10C0
57 42 9A 0A 74 00 3D 83 FC 68 3E C5 2E 00 00 02 -- 0A10D0
```

708

```
75 00 3D 83 FC 6C 3E C5 2E 01 77 E9 C0 2B 00 5C -- 0A10E0
FC 70 36 FF 2E FC 72 36 FF 2E 50 FE 46 8D 16 38 -- 0A10F0
8A FC 70 3E C5 2E FC 70 36 FF 2E FC 72 36 FF 2E -- 0A1100
03 6A 50 E4 2A 05 8A 50 E4 2A 05 8A 50 E4 2A 05 -- 0A1110
3D 83 FC 54 3E C5 2E 01 35 E9 FE 46 8B 01 1A E9 -- 0A1120
3E C5 2E 69 75 00 3D 83 FC 58 3E C5 2E 73 74 00 -- 0A1130
82 36 FF 2E 50 FE 46 8D 16 5F 75 00 3D 83 FC 74 -- 0A1140
FC 7C 36 FF 2E FC 7E 36 FF 2E FC 80 36 FF 2E FC -- 0A1150

68 0A 6A 00 6A 02 6A 35 FF FC 78 3E C5 2E 10 6A -- 0A1160
03 74 00 FE 7E 83 18 C4 83 00 64 40 D0 9A 01 43 -- 0A1170
36 FF 2E FC 82 36 FF 2E 50 FE 46 8D 16 00 D0 E9 -- 0A1180
C5 2E 10 6A FC 88 36 FF 2E FC 8A 36 FF 2E FC 80 -- 0A1190
58 74 00 3D 83 FC 54 3E C5 2E 00 91 E9 FC 84 3E -- 0A11A0
83 FC 8C 3E C5 2E 4E 74 00 3D 83 FC 58 3E C5 2E -- 0A11B0
FF 2E FC 98 36 FF 2E FC 9A 36 FF 2E 44 74 00 3D -- 0A11C0
08 C4 83 00 64 5A 20 9A FC 5C 36 FF 2E FC 5E 36 -- 0A11D0
FF 2E FC 9E 36 FF 2E 00 44 C4 06 9A 24 75 C0 0B -- 0A11E0
5B B4 9A FC 5C 36 FF 2E FC 5E 36 FF 2E FC 9C 36 -- 0A11F0
8B FC 94 3E C5 2E FF 1B E9 08 C4 83 00 64 01 FE -- 0A1200
FF 2E 50 FE 46 8D 16 FF 6C E9 03 75 00 01 3D 05 -- 0A1210
36 FF 2E FC 7E 36 FF 2E FC 80 36 FF 2E FC 82 36 -- 0A1220
6A 00 6A 02 6A 35 FF FC 78 3E C5 2E 10 6A FC 7C -- 0A1230
00 FE 7E 83 18 C4 83 00 64 40 D0 9A 01 43 68 0A -- 0A1240
02 C4 83 00 2C D0 F8 9A FE 76 FF FE D0 E9 03 75 -- 0A1250
00 3C 91 14 00 3C 90 C2 00 6C 31 BE CB 5E 5F C9 -- 0A1260
00 6C 30 E2 00 6C 31 CB 00 6C 31 C4 00 6C 31 E8 -- 0A1270
00 3C B3 14 00 3C 91 12 00 6C 31 E6 00 3C 91 1E -- 0A1280
00 3C B4 2A 00 3C B3 16 00 24 76 FE 00 3C B3 2A -- 0A1290
00 6C 31 D8 00 24 77 8E 00 6C 31 D1 00 3C B3 26 -- 0A12A0
34 C8 57 56 00 24 31 72 00 24 31 6E 00 6C 31 DF -- 0A12B0
00 0C 7E 83 D8 46 89 05 8B FC A0 3E C5 2E 00 00 -- 0A12C0
8B 00 01 DC 46 C7 90 06 EB 00 04 DC 46 C7 08 75 -- 0A12D0
56 8B 14 46 8B F6 56 89 F4 46 89 12 56 8B 10 46 -- 0A12E0
EC 46 89 1A 56 8B 18 46 8B F2 56 89 F0 46 89 16 -- 0A12F0
2E EA 56 89 E8 46 89 1E 56 8B 1C 46 8B EE 56 89 -- 0A1300
5E 8E 02 44 8E 1C 8B FC A6 1E 8E 2E FC A4 36 8B -- 0A1310
CB E9 03 7C 0E 46 3B DA 46 8B 00 00 DA 46 C7 F2 -- 0A1320
05 8A F0 7E 8B FE 46 89 E4 2A 05 8A F4 7E 8B 01 -- 0A1330
75 01 0A 7E 83 FA 46 89 05 8A EC 7E 8B FC 46 89 -- 0A1340
E1 F6 FE 46 8B C8 8A F8 46 89 05 8A E8 7E 8B 45 -- 0A1350
8B F0 8A E4 46 89 08 E8 C1 E1 F6 FC 46 8B EC 8A -- 0A1360
80 C6 2A 00 FF 05 E4 2A C5 8A D4 8A E1 F6 FA 46 -- 0A1370
00 FF 05 C2 2B F6 2A E4 2A C6 8A E6 46 89 00 DC -- 0A1380
89 FA 56 8B FC 4E 8B FE 46 8B 90 1E EB E2 46 89 -- 0A1390
CA 2B 00 FF C1 81 E6 46 89 C1 2B 00 FF 05 E4 4E -- 0A13A0
D8 46 3B DE 46 8B 00 00 DE 46 C7 FB 8B E2 4E 89 -- 0A13B0
03 10 C1 83 E1 D1 E4 4E 8B F7 8B 00 9A E9 03 7C -- 0A13C0
03 F7 8B 02 10 C1 81 E1 D1 E6 4E 8B 04 8B 26 F1 -- 0A13D0
8B 06 0E C1 81 E1 D1 E2 4E 8B C2 8B 24 F7 26 F1 -- 0A13E0
90 56 EB 03 75 00 FA 83 CA 8B 24 F7 26 F1 03 F7 -- 0A13F0
83 80 00 05 E9 F7 0B 74 00 00 3D 05 8B 26 01 FE -- 0A1400
E9 F7 0B 74 00 00 3D 02 45 8B 26 FE 56 01 00 D2 -- 0A1410
00 00 3D 04 45 8B 26 FC 56 01 00 D2 83 80 00 05 -- 0A1420
0A 7E 83 FA 56 01 00 D2 83 80 00 05 E9 F7 0B 74 -- 0A1430
00 05 E9 F7 0B 74 00 00 3D 06 45 8B 26 14 75 01 -- 0A1440
5B E9 0A 0C C7 81 DE 46 FF F8 56 01 00 D2 83 80 -- 0A1450
FF FE 7E 81 00 00 FE 46 C7 05 7D 00 FE 7E 83 FF -- 0A1460
46 C7 05 7D 00 FC 7E 83 00 FF FE 46 C7 05 7E 00 -- 0A1470
83 00 FF FC 46 C7 05 7E 00 FF FC 7E 81 00 00 FC -- 0A1480
```

```
7E  00  FF  FA  7E  81  00  00  FA  46  C7  05  7D  00  FA  7E  --  0A1490
00  F8  46  C7  05  7D  00  F8  7E  83  00  FF  FA  46  C7  05  --  0A14A0
FE  46  8B  00  FF  F8  46  C7  05  7E  00  FF  F8  7E  81  00  --  0A14B0
FA  46  8B  05  88  F0  7E  8B  FC  46  8B  05  88  F4  7E  8B  --  0A14C0
7E  8B  F8  46  8B  08  75  01  0A  7E  83  05  88  EC  7E  8B  --  0A14D0
83  EC  46  01  F0  46  01  F4  46  01  DC  46  8B  05  88  E8  --  0A14E0
5F  C9  FE  2A  E9  DA  46  FF  E8  46  01  03  75  01  0A  7E  --  0A14F0

02  33  F6  3E  83  D8  8E  00  6C  B8  1E  EC  8B  55  CB  5E  --  0A1500
1F  00  64  5C  C6  9A  1E  0C  74  00  33  F6  3E  83  3C  74  --  0A1510
04  3D  06  46  8B  08  76  C5  0C  7E  C4  E6  EB  33  F6  A3  --  0A1520
06  4E  8B  A4  F3  C1  8B  00  01  E1  81  CF  8B  43  7C  00  --  0A1530
7E  C4  90  29  EB  A5  F3  E9  D1  00  01  25  C1  8B  C8  2B  --  0A1540
E1  81  CF  8B  1A  7C  00  04  3D  06  46  8B  08  76  C5  0C  --  0A1550
00  03  25  C1  8B  C8  2B  06  4E  8B  A4  F3  C1  8B  00  03  --  0A1560
00  00  0A  CA  5D  1F  A4  F3  C8  8B  A5  66  F3  02  E9  C1  --  0A1570
40  74  02  33  F8  3E  83  D8  8E  00  6C  B8  1E  EC  8B  55  --  0A1580
F8  A3  1F  00  64  5C  C6  9A  1E  0C  74  00  33  F8  3E  83  --  0A1590
04  3D  C0  03  06  46  8B  08  76  C5  0C  7E  C4  E6  EB  33  --  0A15A0
06  4E  8B  A4  F3  C1  8B  00  01  E1  81  CF  8B  49  7C  00  --  0A15B0
90  2D  EB  A5  F3  E9  D1  00  01  25  C1  8B  C8  2B  C9  03  --  0A15C0
1C  7C  00  04  3D  C0  03  06  46  8B  08  76  C5  0C  7E  C4  --  0A15D0
2B  C9  03  06  4E  8B  A4  F3  C1  8B  00  03  E1  81  CF  8B  --  0A15E0
A4  F3  C8  8B  A5  66  F3  02  E9  C1  00  03  25  C1  8B  C8  --  0A15F0
5E  5F  C9  EC  8B  55  57  56  00  00  0A  CA  5D  1F  01  FE  --  0A1600
0A  46  8B  EC  8B  55  57  56  00  00  00  00  00  00  00  CB  --  0A1610
00  0E  C8  57  56  CB  5E  5F  C9  05  89  03  CE  3E  C5  2E  --  0A1620
10  46  8B  F4  46  89  0E  46  8B  32  74  00  0A  7E  83  00  --  0A1630
6A  00  6A  50  F4  46  8D  16  50  F2  46  8D  16  F6  46  89  --  0A1640
9A  06  6A  06  6A  35  FF  03  CE  3E  C5  2E  0C  76  FF  00  --  0A1650
76  FF  50  F2  46  8D  16  1B  EB  14  C4  83  00  64  3D  BA  --  0A1660
64  3D  BA  9A  07  6A  02  6A  35  FF  03  CE  3E  C5  2E  0C  --  0A1670
57  56  00  00  9E  C8  57  56  CB  5E  5F  C9  0C  C4  83  00  --  0A1680
5E  5F  00  8C  00  02  9A  64  6A  20  6A  50  9C  46  8D  16  --  0A1690
02  FF  79  86  C7  00  03  FF  77  86  C7  70  FF  76  86  C6  --  0A16A0
E4  2A  FF  7C  86  88  E4  2A  FF  7D  86  88  00  01  B8  00  --  0A16B0
7B  86  88  16  46  8B  FF  7F  86  88  E4  2A  FF  7D  86  88  --  0A16C0
16  9C  46  8D  64  80  46  C6  FF  7E  86  88  18  46  8B  FF  --  0A16D0
46  89  00  09  05  09  0A  46  6B  83  56  89  81  46  89  5A  --  0A16E0
46  C6  8A  46  89  0C  46  8B  88  46  89  12  0C  46  6B  86  --  0A16F0
00  64  4E  A1  9A  0C  76  FF  09  6A  03  8E  46  C6  01  8C  --  0A1700
89  FF  72  86  89  FF  70  96  89  FF  6E  86  89  04  C4  83  --  0A1710
46  C7  00  00  96  46  C7  91  56  89  8F  46  89  FF  74  96  --  0A1720
88  FF  72  BE  C5  2B  7D  0C  46  3B  98  46  8B  00  00  98  --  0A1730
12  96  46  83  05  45  89  96  46  8B  00  00  01  45  C7  05  --  0A1740
83  98  46  FF  07  45  89  96  46  8B  03  45  89  86  46  8B  --  0A1750
50  86  46  8D  16  50  9A  46  8D  16  CD  EB  09  FF  72  86  --  0A1760
06  6A  35  FF  03  CE  3E  C5  2E  10  6A  50  94  46  8D  16  --  0A1770
B6  FF  FF  70  B6  FF  14  C4  83  00  64  3D  BA  9A  08  6A  --  0A1780
03  74  00  9A  7E  83  04  C4  83  00  64  4E  E3  9A  FF  6E  --  0A1790
3E  C5  2E  94  76  FF  64  6A  50  9A  46  8D  16  01  05  E9  --  0A17A0
0E  C4  83  00  64  3D  BA  9A  15  6A  03  6A  35  FF  03  CE  --  0A17B0
76  FF  50  9A  46  8D  16  00  DF  E9  03  74  00  9A  7E  83  --  0A17C0
35  FF  03  CE  3E  C5  2E  94  76  FF  00  6A  0E  76  FF  10  --  0A17D0
00  9A  7E  83  12  C4  83  00  64  3D  BA  9A  02  6A  05  6A  --  0A17E0
0C  46  3B  98  46  8B  00  00  98  46  C7  00  B3  E9  03  74  --  0A17F0
FF  50  FF  76  86  8D  16  50  9A  46  8D  16  31  7D  01  FE  --  0A1800
05  6A  35  FF  03  CE  3E  C5  2E  35  FF  0E  7E  C5  98  76  --  0A1810
7A  75  00  9A  7E  83  12  C4  83  00  64  3D  BA  9A  03  6A  --  0A1820
89  14  46  8B  FF  62  86  89  12  46  8B  C7  EB  98  46  FF  --  0A1830
```

```
00 6A 50 FF 62 86 8D 16 50 9A 46 8D 16 FF 64 86 -- 0A1840
06 6A 35 FF 03 CE 3E C5 2E 35 FF 0E 7E C5 00 6A -- 0A1850
3A 75 00 9A 7E 83 14 C4 83 00 64 3D BA 9A 06 6A -- 0A1860
8E 2E 03 D6 3E 03 2E E7 D1 3D 8B 03 D2 3E C5 2E -- 0A1870
C5 2E 05 8B 0E 7E C5 01 45 88 94 46 8B 03 D8 1E -- 0A1880
D8 1E 8E 2E 03 D6 3E 03 2E E7 D1 3D 8B 03 D2 3E -- 0A1890

5E 5F C9 9A 46 8B 05 FF 03 D2 3E C5 2E 05 88 03 -- 0A18A0
00 6A 50 E6 46 8D 16 57 56 00 00 1E C8 57 56 CB -- 0A18B0
2A EF 46 88 00 01 B8 5E 5F 00 8C 00 02 9A 0A 6A -- 0A18C0
7D 10 46 3B E2 46 8B 00 00 E2 46 C7 EE 46 88 E4 -- 0A18D0
40 0E 56 8B 0C 46 8B FA 46 88 05 8B 0C 7E C5 4D -- 0A18E0
F0 46 8D 16 50 E4 46 8D 16 FD 56 89 FB 46 89 40 -- 0A18F0
CE 3E C5 2E 0A 76 FF E2 76 FF 50 E6 46 8D 16 50 -- 0A1900
83 16 C4 83 00 64 3D BA 9A 04 6A 07 6A 35 FF 03 -- 0A1910
46 8B AB EB 66 0C 46 83 E2 46 FF 09 75 00 E4 7E -- 0A1920
00 00 FC 46 C7 00 00 06 C8 57 56 CB 5E 5F C9 E4 -- 0A1930
8B 00 92 E9 03 7C 05 3B FC 46 8B 03 D2 3E C5 2E -- 0A1940
05 8A 03 D8 1E 8E 2E 03 D6 3E 03 2E E7 D1 FC 7E -- 0A1950
D1 FC 7E 8B 50 FE 46 8D 16 74 75 0A 46 3B E4 2A -- 0A1960
CE 3E C5 2E 50 E4 2A 01 45 8A 03 D6 3E 03 2E E7 -- 0A1970
2E 0C C4 83 00 64 3D BA 9A 16 6A 02 6A 35 FF 03 -- 0A1980
FA 46 89 39 74 05 3B FC 46 8B 0D FF 03 D2 3E C5 -- 0A1990
D1 40 02 6A 2A 7D 05 3B FA 46 8B 03 D2 3E C5 2E -- 0A19A0
FA 46 8B 50 52 03 D8 16 8B 2E 03 D6 06 03 2E E0 -- 0A19B0
C4 83 00 5C ED 6E 9A 50 52 03 D6 06 03 2E E0 D1 -- 0A19C0
5F E9 FC 46 FF 08 EB FE 46 8B CA EB FA 46 FF 0A -- 0A19D0
00 6C 12 3E 00 6C 14 40 00 CB 5E 5F C9 C0 2B FF -- 0A19E0
3D 83 07 2E 3E C5 2E EC 8B 55 57 56 00 6C 12 40 -- 0A19F0
C5 2E 00 00 05 C7 07 32 3E C5 2E 71 75 00 01 FE -- 0A1A00
36 36 FF 2E 07 38 36 FF 2E 00 01 05 C7 07 2E 3E -- 0A1A10
07 3C 36 FF 2E 57 56 04 C4 83 00 14 F4 F5 9A 07 -- 0A1A20
5F 00 8C 00 02 9A 00 9C 68 00 6A 07 3A 36 FF 2E -- 0A1A30
C7 00 01 05 C7 00 01 08 45 C7 07 3A 3E C5 2E 5E -- 0A1A40
07 40 36 FF 2E 57 56 00 04 12 45 C7 00 00 0A 45 -- 0A1A50
5F 00 8C 00 02 9A 00 84 68 20 6A 07 3E 36 FF 2E -- 0A1A60
2E EC 8B 55 57 56 CB 5E 5F C9 00 64 04 5E 9A 5E -- 0A1A70
32 3E C5 2E 02 8E E9 03 75 00 3D 83 07 2E 3E C5 -- 0A1A80
2E 07 42 36 FF 2E 07 44 36 FF 2E 00 01 05 C7 07 -- 0A1A90
97 5E 9A 50 00 42 05 07 3E 06 8B 2E 07 40 36 FF -- 0A1AA0
2E 07 46 36 FF 2E 07 48 36 FF 2E 08 C4 83 00 5C -- 0A1AB0
97 5E 9A 50 00 58 05 07 3E 06 8B 2E 07 40 36 FF -- 0A1AC0
80 05 74 00 3D 80 07 4A 3E C5 2E 08 C4 83 00 5C -- 0A1AD0
FF 2E 07 52 36 FF 2E 07 54 36 FF 2E 4D 75 01 3D -- 0A1AE0
06 8B 2E 07 40 36 FF 2E 07 4E 36 FF 2E 07 50 36 -- 0A1AF0
FF 2E 0C C4 83 00 5C 97 5E 9A 50 00 42 05 07 3E -- 0A1B00
36 FF 2E 07 58 36 FF 2E 07 5A 36 FF 2E 07 5C 36 -- 0A1B10
EB 00 58 05 07 3E 06 8B 2E 07 40 36 FF 2E 07 56 -- 0A1B20
07 60 36 FF 2E 07 62 36 FF 2E 07 64 36 FF 2E 75 -- 0A1B30
05 07 3E 06 8B 2E 07 40 36 FF 2E 07 5E 36 FF 2E -- 0A1B40
07 54 36 FF 2E 0C C4 83 00 5C 97 5E 9A 50 00 42 -- 0A1B50
2E 07 66 36 FF 2E 07 68 36 FF 2E 07 52 36 FF 2E -- 0A1B60
97 5E 9A 50 00 58 05 07 3E 06 8B 2E 07 40 36 FF -- 0A1B70
2E 07 5A 36 FF 2E 07 5C 36 FF 2E 0C C4 83 00 5C -- 0A1B80
8B 2E 07 40 36 FF 2E 07 6A 36 FF 2E 07 6C 36 FF -- 0A1B90
2E 0C C4 83 00 5C 97 5E 9A 50 00 6E 05 07 3E 06 -- 0A1BA0
45 C7 07 3A 3E C5 2E 16 75 4D 3D 80 07 6E 3E C5 -- 0A1BB0
2E 14 EB 07 72 36 FF 2E 07 74 36 FF 2E 00 02 12 -- 0A1BC0
FF 2E 07 78 36 FF 2E 00 04 12 45 C7 07 3A 3E C5 -- 0A1BD0
97 5E 9A 07 3E 36 FF 2E 07 40 36 FF 2E 07 76 36 -- 0A1BE0
```

711

```
2E 07 7A 36 FF 2E 07 7C 36 FF 2E 08 C4 83 00 5C -- 0A1BF0
9A 50 00 16 05 07 3E 06 8B 2E 07 40 36 FF 01 FE -- 0A1C00
9A 05 D9 9B 07 86 3E C5 2E 08 C4 83 00 5C 97 5E -- 0A1C10
5C ED 99 9A 08 C4 83 00 64 53 E8 9A 00 5C ED 99 -- 0A1C20
E8 9A 00 5C ED 99 9A 05 D9 9B 07 82 3E C5 2E 00 -- 0A1C30

07 80 36 FF 2E 00 5C ED 99 9A 08 C4 83 00 64 53 -- 0A1C40
05 07 3E 06 8B 2E 07 40 36 FF 2E 07 7E 36 FF 2E -- 0A1C50
07 8C 36 FF 2E 18 C4 83 00 5C 97 5E 9A 50 00 16 -- 0A1C60
05 07 3E 06 8B 2E 07 40 36 FF 2E 07 8A 36 FF 2E -- 0A1C70
07 96 3E C5 2E 08 C4 83 00 5C 97 5E 9A 50 00 2C -- 0A1C80
08 C4 83 00 64 54 18 9A 00 5C ED 99 9A 05 D9 9B -- 0A1C90
ED 99 9A 05 D9 9B 07 92 3E C5 2E 00 5C ED 99 9A -- 0A1CA0
2E 00 5C ED 99 9A 08 C4 83 00 64 54 18 9A 00 5C -- 0A1CB0
8B 2E 07 40 36 FF 2E 07 8E 36 FF 2E 07 90 36 FF -- 0A1CC0
2E 18 C4 83 00 5C 97 5E 9A 50 00 2C 05 07 3E 06 -- 0A1CD0
07 40 36 FF 2E 01 6A 07 3A 36 FF 2E 07 3C 36 FF -- 0A1CE0
14 F5 9B 9A 35 FF 07 36 3E C5 2E 07 3E 36 FF 2E -- 0A1CF0
00 14 FA 45 9A 35 FF 07 36 3E C5 2E 0C C4 83 00 -- 0A1D00
5E 5F C9 9B 00 00 05 C7 07 32 3E C5 2E 02 C4 83 -- 0A1D10
18 74 00 3D 83 07 2E 3E C5 2E EC 8B 55 57 56 CB -- 0A1D20
2E 02 C4 83 00 14 F8 4D 9A 35 FF 07 36 3E C5 2E -- 0A1D30
00 6C 11 18 CB 5E 5F C9 00 00 05 C7 07 2E 3E C5 -- 0A1D40
00 6C 11 1C 00 6C 11 A0 00 6C 11 1A 00 6C 12 3C -- 0A1D50
00 6C 10 66 00 6C 20 8C 00 6C 10 50 00 6C 10 3A -- 0A1D60
00 6C 10 7A 00 3C 90 FF 00 6C 10 6D 00 3C 90 C9 -- 0A1D70
00 6C 33 BE 00 6C 10 8A 00 6C 10 83 00 3C 90 DB -- 0A1D80
00 6C 10 D9 00 6C 10 C3 00 6C 10 AD 00 6C 10 97 -- 0A1D90
00 6C 11 03 00 6C 10 ED 00 6C 29 2A 00 6C 29 26 -- 0A1DA0
8B 2E 00 00 04 C8 57 56 00 6C 28 D8 00 6C 28 DC -- 0A1DB0
8B 2E FE 56 89 FC 46 89 0B 1C 16 8B 2E 0B 1A 06 -- 0A1DC0
0E 76 FC 46 3B 01 68 05 0B 1C 16 8B 2E 0B 1A 06 -- 0A1DD0
8B 2E E0 EB 12 FC 46 83 06 74 00 3D 83 FC 7E C5 -- 0A1DE0
0B 75 FE 56 3B 01 68 05 0B 1C 16 8B 2E 0B 1A 06 -- 0A1DF0
FE 76 FF 1A EB D0 8B C0 2B 06 75 FC 46 3B 01 FE -- 0A1E00
9A 0A 76 FF 0C 76 FF 0E 76 FF 10 76 FF FC 76 FF -- 0A1E10
01 08 C8 57 56 CB 5E 5F C9 0C C4 83 00 64 08 0B -- 0A1E20
0A 64 9A 53 14 76 FF 13 74 00 3F 83 12 5E C5 00 -- 0A1E30
46 C7 F6 2B 01 C9 E9 03 74 C0 0B 04 C4 83 00 64 -- 0A1E40
0B FA 46 89 98 07 8A 0E 46 FF 0E 5E C5 00 00 FE -- 0A1E50
83 E4 EB 00 01 CE 81 06 75 72 FA 7E 83 2F 74 C0 -- 0A1E60
75 61 FA 7E 83 D8 EB 00 02 CE 81 06 75 77 FA 7E -- 0A1E70
FE 46 FF C6 75 62 FA 7E 83 CC EB 00 04 CE 81 06 -- 0A1E80
16 0A 76 FF 0C 76 FF 01 7C E9 03 75 F6 0B C1 EB -- 0A1E90
1E 68 0E 08 C4 83 00 64 4F A4 9A 50 FE FA 86 8D -- 0A1EA0
0B 08 C4 83 00 64 0A CE 9A 0A 76 FF 0C 76 FF 0B -- 0A1EB0
50 FE FA 86 8D 16 57 56 24 74 02 FE 83 29 75 C0 -- 0A1EC0
FC 46 89 5E 5F 00 5C BE 72 9A 50 FE F8 86 8D 16 -- 0A1ED0
8D 16 57 56 18 75 04 FE 83 1D 75 21 FE F8 BE 83 -- 0A1EE0
5F 00 5C BE 52 9A 50 FE F8 86 8D 16 50 FE FA 86 -- 0A1EF0
04 E9 00 BF E9 03 75 00 FE F8 BE 83 FC 46 89 5E -- 0A1F00
6A 00 6A 04 6A FC 76 FF 57 56 18 75 04 FE 83 01 -- 0A1F10
46 8B 5E 5F 00 5C BE B2 9A 50 FE F8 86 8D 16 00 -- 0A1F20
47 89 06 47 89 D0 8B C0 2B 0E 47 89 12 5E C5 FC -- 0A1F30
FF 04 47 C7 00 00 02 47 C7 0C 57 89 0A 47 89 08 -- 0A1F40
C5 07 75 03 FE 83 05 74 01 FE 83 00 00 07 C7 FF -- 0A1F50
05 74 03 FE 83 0A 74 02 FE 83 00 04 0F 81 12 5E -- 0A1F60
00 FE 7E 83 00 03 0F 81 12 5E C5 07 75 04 FE 83 -- 0A1F70
0C 76 FF 0B 25 68 0E 00 08 0F 81 12 5E C5 07 74 -- 0A1F80
C5 09 74 C0 0B 08 C4 83 00 64 0A CE 9A 0A 76 FF -- 0A1F90
```

```
FF 0C 76 FF 0B 2A 68 0E 1D EB 02 00 0F 81 12 5E -- 0A1FA0
5E C5 07 74 C0 0B 08 C4 83 00 64 0A CE 9A 0A 76 -- 0A1FB0
01 FE 83 4C EB 14 56 8B 12 46 8B 04 00 0F 81 12 -- 0A1FC0
EB 00 03 BF 05 75 03 FE 83 0D EB 00 01 BF 05 75 -- 0A1FD0

F8 86 8D 16 00 6A 57 FC 76 FF 57 56 00 02 BF 03 -- 0A1FE0
03 75 00 FE F8 BE 83 5E 5F 00 5C BE 32 9A 50 FE -- 0A1FF0
50 FE F8 86 8D 16 FC 76 FF 57 56 FF 0E E9 01 FE -- 0A2000
56 CB 5E 5F C9 D0 8B C0 2B 5E 5F 00 5C BE D2 9A -- 0A2010
45 8B 52 74 00 01 05 F7 0A 7E C5 00 00 02 C8 57 -- 0A2020
C0 0B F0 8B 02 45 2B 00 80 B8 4A 74 0A 45 0B 0C -- 0A2030
8D 16 56 0A 75 FF 0C 75 FF 0E 75 FF 57 56 3E 74 -- 0A2040
0C 74 00 FE 7E 83 5E 5F 00 5C BE 12 9A 50 FE 46 -- 0A2050
8B 0A 7E C5 16 EB FF FF B8 00 20 0D 81 0A 7E C5 -- 0A2060
00 80 02 45 C7 08 55 89 06 45 89 0C 55 8B 0A 45 -- 0A2070
FF 0C 76 FF 00 00 02 C8 57 56 CB 5E 5F C9 C0 2B -- 0A2080
7E C5 57 56 F0 8B 04 C4 83 00 64 09 FD 9A 0A 76 -- 0A2090
5E 5F 00 5C BE 92 9A 50 FE 46 8D 16 0E 75 FF 0A -- 0A20A0
BE D2 9A 50 FE 46 8D 16 0E 75 FF 0A 7E C5 57 56 -- 0A20B0
F7 14 74 0A 45 0B 0C 45 8B 0A 7E C5 5E 5F 00 5C -- 0A20C0
00 64 4E E3 9A 0A 75 FF 0C 75 FF 0E 75 00 10 05 -- 0A20D0
CB 5E 5F C9 C6 8B 00 00 05 C7 0A 7E C5 04 C4 83 -- 0A20E0
F0 8B 98 07 8A 0A 46 FF 0A 5E C5 EC 8B 55 57 56 -- 0A20F0
0E 5E C5 20 EE 83 03 7F 7A FE 83 08 7C 00 61 3D -- 0A2100
7A FF 83 08 7C 00 61 3D F8 8B 98 07 8A 0E 46 FF -- 0A2110
75 FE 3B C8 75 F6 0B 04 75 FE 3B 20 EF 83 03 7F -- 0A2120
00 24 FE 8E CB 5E 5F C9 C0 2B 02 EB 00 01 B8 05 -- 0A2130
3A 6F 63 3A 00 3A 69 63 3A 00 3A 6B 72 6F 77 3A -- 0A2140
C5 4B 74 00 3D 80 0A 7E C5 EC 8B 55 57 56 00 00 -- 0A2150
7F 7A 3D 80 0F 7C 61 3D 80 43 74 00 3D 80 0E 7E -- 0A2160
05 8A 0E 7E C5 08 EB 20 EE 83 F0 8B 98 05 8A 0A -- 0A2170
08 7F 7A 3D 80 0D 7C 61 3D 80 0A 7E C5 F0 8B 98 -- 0A2180
C6 3B 98 05 8A 0A 7E C5 06 EB 00 20 2D 98 05 8A -- 0A2190
98 05 8A 0E 7E C5 AD EB 0E 46 FF 0A 46 FF 08 75 -- 0A21A0
57 56 CB 5E 5F C9 C6 2B 98 05 8A 0A 7E C5 F0 8B -- 0A21B0
E0 C1 04 00 05 05 8B 0E 62 3E C5 2E 00 00 06 C8 -- 0A21C0
89 0E 5E 3E C5 2E 02 C4 83 00 64 4E 56 9A 50 02 -- 0A21D0
05 8B 0E 62 3E C5 2E 00 00 FE 46 C7 02 55 89 05 -- 0A21E0
FE 7E 8B 0E 5E 36 C4 2E 28 7E FE 46 3B 04 00 05 -- 0A21F0
89 FF FF B8 02 5C 8E 26 3C 03 26 02 E7 C1 01 FE -- 0A2200
FE 46 FF 05 89 3C 03 26 02 E7 C1 FE 7E 8B 02 45 -- 0A2210
7E 8B 18 7D 04 00 FE 7E 81 00 00 FE 46 C7 C9 EB -- 0A2220
FF 05 C7 0E 68 1E 8E 2E 0E 66 3E 03 2E E7 D1 FE -- 0A2230
04 00 FE 7E 81 00 00 FE 46 C7 E1 EB FE 46 FF FF -- 0A2240
89 FA 8B 0E 6A 3E F7 2E 99 00 64 55 EA 9A 37 7D -- 0A2250
05 8B 0E 68 1E 8E 2E 0E 66 3E 03 2E E7 D1 FC 7E -- 0A2260
8B 0E 66 3E 03 2E E7 D1 FC 7E 8B DD 75 FF FF 3D -- 0A2270
C5 2E 00 00 FE 46 C7 C2 EB FE 46 FF 05 89 FE 46 -- 0A2280
FE 7E 8B 00 B3 E9 03 7C 05 3B FE 46 8B 0E 62 3E -- 0A2290
02 75 FF 0E 6E 1E 8E 2E 0E 6C 3E 03 2E 03 E7 C1 -- 0A22A0
36 C4 2E FA 46 89 04 C4 83 00 64 0D 30 9A 35 FF -- 0A22B0
8B 02 5C 8E 26 3C 03 26 02 E7 C1 FA 7E 8B 0E 5E -- 0A22C0
8B 3C 03 26 02 E7 C1 FA 7E 8B 10 75 FF FF 3D 05 -- 0A22D0
E7 C1 FA 7E 8B 0E 5E 36 C4 2E 64 EB 05 89 FE 46 -- 0A22E0
11 74 FF FF 3D 02 45 8B 02 5C 8E 26 3C 03 26 02 -- 0A22F0
EB FA 46 89 02 45 8B 3C 03 26 02 E7 C1 FA 7E 8B -- 0A2300
FA 7E 8B 0E 5E 36 C4 2E 05 8B 0E 70 3E C5 2E D5 -- 0A2310
3E C5 2E 02 45 89 02 5C 8E 26 3C 03 26 02 E7 C1 -- 0A2320
46 8B 02 5C 8E 26 3C 03 26 02 E7 C1 3D 8B 0E 70 -- 0A2330
FF 3E E9 FE 46 FF 05 FF 0E 70 3E C5 2E 05 89 FE -- 0A2340
```

713

```
FF  00  00  FE  46  C7  00  00  08  C8  57  56  CB  5E  5F  C9  --  0A2350
FA  46  89  04  C4  83  00  64  5C  0E  9A  0A  76  FF  0C  76  --  0A2360
FC  7E  8B  55  7D  FA  46  3B  FC  46  8B  00  00  FC  46  C7  --  0A2370

7E  03  FC  7E  8B  19  7C  61  3D  80  0C  5E  8E  0A  7E  03  --  0A2380
2D  98  05  8A  0A  7E  03  FC  7E  8B  0E  7F  7A  3D  80  0A  --  0A2390
98  05  8A  0C  5E  8E  0A  7E  03  FC  7E  8B  0C  EB  00  20  --  0A23A0
03  2E  E7  D1  FE  7E  33  F8  8B  98  F9  46  8A  F9  46  88  --  0A23B0
FC  46  FF  FE  46  89  05  8B  0E  68  1E  8E  2E  0E  66  3E  --  0A23C0
04  C8  57  56  CB  5E  5F  C9  03  FF  25  FE  46  8B  A3  EB  --  0A23D0
04  C4  83  00  64  0D  30  9A  0A  76  FF  0C  76  FF  00  00  --  0A23E0
03  26  02  E7  C1  FE  7E  8B  0E  5E  36  C4  2E  FE  46  89  --  0A23F0
C4  2E  6D  EB  FF  FF  3D  05  8B  02  5C  8E  26  3C  01  FE  --  0A2400
02  5C  8E  26  3C  03  26  02  E7  C1  FE  7E  8B  0E  5E  36  --  0A2410
06  03  2E  03  E0  C1  08  6A  08  EC  83  FC  46  89  05  8B  --  0A2420
50  00  08  05  C4  8B  16  50  52  0E  6E  16  8B  2E  0E  6C  --  0A2430
30  9A  0A  76  FF  0C  76  FF  0A  C4  83  00  5C  ED  6E  9A  --  0A2440
2E  21  EB  FC  46  8B  05  75  C0  0B  0C  C4  83  00  64  0B  --  0A2450
5C  8E  26  3C  03  26  02  E7  C1  FE  7E  8B  0E  5E  36  C4  --  0A2460
FF  FF  B8  91  75  FF  FE  7E  83  FE  46  89  02  45  8B  02  --  0A2470
00  3C  BE  C8  00  3C  2C  80  00  3C  BE  C2  CB  5E  5F  C9  --  0A2480
00  00  22  C8  57  56  00  3C  BE  C6  00  3C  1B  18  04  00  --  0A2490
C7  11  0E  3E  C5  2E  00  00  DE  46  C7  00  64  23  6E  9A  --  0A24A0
FF  2E  11  18  36  FF  2E  01  6A  FF  6A  12  6A  00  01  05  --  0A24B0
93  FD  9A  11  12  36  FF  2E  11  14  36  FF  2E  11  16  36  --  0A24C0
5C  ED  6E  9A  50  EE  46  8D  16  50  52  0C  C4  83  00  5C  --  0A24D0
EE  46  8B  02  42  E9  03  74  00  FC  7E  83  0A  C4  83  00  --  0A24E0
FF  2E  50  E8  46  8D  16  EC  56  89  EA  46  89  F0  56  8B  --  0A24F0
E3  9A  EA  76  FF  EC  76  FF  11  1A  36  FF  2E  11  1C  36  --  0A2500
EC  76  FF  00  6A  50  E8  46  8D  16  0C  C4  83  00  54  F6  --  0A2510
50  EE  46  8D  16  0A  C4  83  00  5C  61  60  9A  EA  76  FF  --  0A2520
36  FF  2E  11  1C  36  FF  2E  04  C4  83  00  5C  94  D5  9A  --  0A2530
4C  15  55  9A  11  1E  36  FF  2E  11  20  36  FF  2E  11  1A  --  0A2540
22  3E  C5  2E  05  D9  9B  11  26  3E  C5  2E  08  C4  83  00  --  0A2550
D9  9B  11  26  3E  C5  2E  11  2E  36  C4  2E  1D  D9  9B  11  --  0A2560
3E  C5  2E  1D  D9  9B  11  2A  3E  C5  2E  04  D8  26  9B  05  --  0A2570
36  C4  2E  1D  D9  9B  11  32  3E  C5  2E  05  D9  9B  11  36  --  0A2580
C5  2E  04  D8  26  9B  05  D9  9B  11  36  3E  C5  2E  11  3E  --  0A2590
D9  9B  05  D9  9B  11  3E  3E  C5  2E  1D  D9  9B  11  3A  3E  --  0A25A0
8D  16  E4  5E  D9  9B  05  D9  9B  11  2E  3E  C5  2E  E0  5E  --  0A25B0
83  00  2C  00  00  9A  50  E0  46  8D  16  02  6A  50  E8  46  --  0A25C0
50  E8  46  8D  16  01  54  E9  03  74  00  E8  7E  83  0A  C4  --  0A25D0
03  74  00  E8  7E  83  06  C4  83  00  2C  11  03  9A  01  6A  --  0A25E0
50  E8  46  8D  16  16  05  C6  11  42  3E  C5  2E  01  3C  E9  --  0A25F0
05  6A  01  6A  11  42  36  FF  2E  11  44  36  FF  2E  01  FE  --  0A2600
2E  50  E8  46  8D  16  0E  C4  83  00  64  40  D0  9A  6E  6A  --  0A2610
D0  9A  01  F5  68  03  6A  50  05  8B  05  FF  11  46  3E  C5  --  0A2620
2E  00  F2  E9  03  74  00  E8  7E  83  0A  C4  83  00  64  40  --  0A2630
46  8D  16  05  89  11  4A  3E  C5  2E  05  8B  11  46  3E  C5  --  0A2640
D0  9A  02  02  68  03  6A  50  DE  46  FF  DE  46  8B  50  E8  --  0A2650
2E  00  C2  E9  03  74  00  E8  7E  83  0A  C4  83  00  64  40  --  0A2660
15  E0  9A  50  00  03  05  11  16  06  8B  2E  11  18  36  FF  --  0A2670
FF  11  4E  3E  C5  2E  00  44  57  40  9A  04  C4  83  00  64  --  0A2680
5A  4B  9A  00  6A  00  6A  02  C4  83  00  5C  B3  DE  9A  35  --  0A2690
2E  6B  7E  00  3D  83  11  4A  3E  C5  2E  04  C4  83  00  44  --  0A26A0
2E  1D  D9  9B  11  52  3E  C5  2E  05  D9  9B  11  22  3E  C5  --  0A26B0
2E  1D  D9  9B  11  56  3E  C5  2E  05  D9  9B  11  32  3E  C5  --  0A26C0
2E  1D  D9  9B  11  5A  3E  C5  2E  05  D9  9B  11  2A  3E  C5  --  0A26D0
16  1D  D9  9B  11  5E  3E  C5  2E  05  D9  9B  11  3A  3E  C5  --  0A26E0
04  6A  11  52  36  FF  2E  11  54  36  FF  2E  50  E8  46  8D  --  0A26F0
```

```
75 00 E8 7E 83 0C C4 83 00 64 40 D0 9A 01 F8 68 -- 0A2700
16 00 64 11 62 9A 00 00 05 C7 11 4A 3E C5 2E 20 -- 0A2710

54 A0 E0 9A 04 C4 83 00 64 13 07 9A 50 E8 46 8D -- 0A2720
86 F6 00 3C 86 A2 00 6C 27 C4 CB 5E 5F C9 9B 00 -- 0A2730
90 A0 00 3C 92 38 00 3C 90 36 00 6C 26 C2 00 3C -- 0A2740
90 A4 00 3C 92 40 00 3C 90 7A 00 3C 92 3C 00 3C -- 0A2750
86 9C 00 3C 91 18 00 3C 90 7E 00 3C 92 44 00 3C -- 0A2760
91 3A 00 3C 91 32 00 3C 91 10 00 3C 86 9E 00 3C -- 0A2770
00 00 08 C8 57 56 00 3C 91 3E 00 3C 91 36 00 3C -- 0A2780
8D 16 34 FB 46 C6 FE 46 89 05 8B 14 3C 3E C5 2E -- 0A2790
2E 68 04 6A FE 76 FF 01 6A 0D 6A 00 6A 50 FC 46 -- 0A27A0
8D 16 50 FC 46 8D 16 10 C4 83 00 64 3D BA 9A 01 -- 0A27B0
3D BA 9A 01 2F 68 04 6A FE 76 FF 0D 6A 50 FB 46 -- 0A27C0
03 6A 0B 6A 00 6A 50 FC 46 8D 16 10 C4 83 00 64 -- 0A27D0
10 C4 83 00 64 3D BA 9A 01 2E 68 04 6A FE 76 FF -- 0A27E0
6A FE 76 FF 0B 6A 50 FB 46 8D 16 50 FC 46 8D 16 -- 0A27F0
5F C9 10 C4 83 00 64 3D BA 9A 01 2F 68 04 01 FE -- 0A2800
89 05 8B 14 3C 3E C5 2E 00 00 04 C8 57 56 CB 5E -- 0A2810
0D 6A 00 6A 0A 76 FF 0C 76 FF 18 FD 46 C6 FE 46 -- 0A2820
10 C4 83 00 64 3D BA 9A 01 2E 68 04 6A 50 01 6A -- 0A2830
FE 76 FF 0D 6A 50 FD 46 8D 16 0A 76 FF 0C 76 FF -- 0A2840
0C 76 FF 10 C4 83 00 64 3D BA 9A 01 2F 68 04 6A -- 0A2850
3D BA 9A 01 2C 68 02 6A FE 76 FF 01 6A 0A 76 FF -- 0A2860
2E 00 00 04 C8 57 56 CB 5E 5F C9 0C C4 83 00 64 -- 0A2870
0C 76 FF 3C FD 46 C6 FE 46 89 05 8B 14 3C 3E C5 -- 0A2880
9A 01 2E 68 04 6A 50 01 6A 0D 6A 00 6A 0A 76 FF -- 0A2890
46 8D 16 0A 76 FF 0C 76 FF 10 C4 83 00 64 3D BA -- 0A28A0
64 3D BA 9A 01 2F 68 04 6A FE 76 FF 0D 6A 50 FD -- 0A28B0
03 6A 0B 6A 00 6A 0A 76 FF 0C 76 FF 10 C4 83 00 -- 0A28C0
10 C4 83 00 64 3D BA 9A 01 2E 68 04 6A FE 76 FF -- 0A28D0
FE 76 FF 0B 6A 50 FD 46 8D 16 0A 76 FF 0C 76 FF -- 0A28E0
0C 76 FF 10 C4 83 00 64 3D BA 9A 01 2F 68 04 6A -- 0A28F0
3D BA 9A 01 2C 68 02 6A FE 76 FF 01 6A 0A 76 FF -- 0A2900
FE 76 FF 03 6A 0A 76 FF 0C 76 FF 0C C4 83 00 64 -- 0A2910
5E 5F C9 0C C4 83 00 64 3D BA 9A 01 2C 68 02 6A -- 0A2920
46 89 05 8B 14 3C 3E C5 2E 00 00 02 C8 57 56 CB -- 0A2930
9A 01 2C 68 02 6A 50 01 6A 0A 76 FF 0C 76 FF FE -- 0A2940
FF 03 6A 0A 76 FF 0C 76 FF 0C C4 83 00 64 3D BA -- 0A2950
C9 0C C4 83 00 64 3D BA 9A 01 2C 68 02 6A FE 76 -- 0A2960
05 8B 14 3C 3E C5 2E 00 00 02 C8 57 56 CB 5E 5F -- 0A2970
2D 68 02 6A 50 01 6A 0A 76 FF 0C 76 FF FE 46 89 -- 0A2980
6A 0A 76 FF 0C 76 FF 0C C4 83 00 64 3D BA 9A 01 -- 0A2990
C4 83 00 64 3D BA 9A 01 2D 68 02 6A FE 76 FF 03 -- 0A29A0
14 3C 3E C5 2E 00 00 0A C8 57 56 CB 5E 5F C9 0C -- 0A29B0
49 9A 50 F6 46 8D 16 04 FB 46 C6 FE 46 89 05 8B -- 0A29C0
6A 0D 6A 00 6A 50 FC 46 8D 16 04 C4 83 00 64 13 -- 0A29D0
C4 83 00 64 3D BA 9A 01 2E 68 04 6A FE 76 FF 01 -- 0A29E0
FE 76 FF 0D 6A 50 FB 46 8D 16 50 FC 46 8D 16 10 -- 0A29F0
C9 10 C4 83 00 64 3D BA 9A 01 2F 68 04 6A 01 FE -- 0A2A00
05 8B 14 3C 3E C5 2E 00 00 02 C8 57 56 CB 5E 5F -- 0A2A10
2C 68 02 6A 50 01 6A 0A 76 FF 0C 76 FF FE 46 89 -- 0A2A20
C8 57 56 CB 5E 5F C9 0C C4 83 00 64 3D BA 9A 01 -- 0A2A30
0C 76 FF FE 46 89 05 8B 14 3C 3E C5 2E 00 00 02 -- 0A2A40
00 64 3D BA 9A 01 2D 68 02 6A 50 01 6A 0A 76 FF -- 0A2A50
02 C8 57 56 00 3C F5 A4 00 CB 5E 5F C9 0C C4 83 -- 0A2A60
16 F2 3E C5 2E 00 04 05 C7 16 EE 3E C5 2E 00 00 -- 0A2A70
14 75 BB 0E 46 8B 01 7E E9 03 74 FF FF 3D 05 8B -- 0A2A80
2E 00 94 E9 03 74 F9 E0 07 3B 2E 43 43 00 05 B9 -- 0A2A90
D0 14 C2 00 46 00 0A 00 03 00 02 00 01 0A 67 FF -- 0A2AA0
```

```
FF 2E 16 FC 36 FF 2E 07 6A 14 8B 14 DE 14 B4 14 -- 0A2AB0
58 BA 9A 16 F6 36 FF 2E 16 F8 36 FF 2E 16 FA 36 -- 0A2AC0
71 EB 00 07 05 C7 16 EE 3E C5 2E 0A C4 83 00 64 -- 0A2AD0
04 6A D5 EB 16 FE 36 FF 2E 17 00 36 FF 2E 07 6A -- 0A2AE0
FF 2E 04 6A 43 EB 17 02 36 FF 2E 17 04 36 FF 2E -- 0A2AF0
0C 36 FF 2E 06 6A 35 EB 17 06 36 FF 2E 17 08 36 -- 0A2B00
16 F6 36 FF 2E 16 F8 36 FF 2E 17 0A 36 FF 2E 17 -- 0A2B10
06 05 C7 16 EE 3E C5 2E 0A C4 83 00 64 58 BA 9A -- 0A2B20
2E 17 0E 36 FF 2E 17 10 36 FF 2E 04 6A 1E EB 00 -- 0A2B30
C4 83 00 64 58 BA 9A 16 F6 36 FF 2E 16 F8 36 FF -- 0A2B40
7D 15 FE 7E 83 FE 46 89 05 8B 16 EE 3E C5 2E 0A -- 0A2B50
EB FE 46 FF 20 05 C6 FE 7E 03 16 F6 3E C5 2E 10 -- 0A2B60
0A 76 FF 0C 76 FF 03 39 68 03 6A 02 6A 04 6A EA -- 0A2B70
8B 0A 7E C5 10 C4 83 00 64 00 70 9A 15 6A 01 6A -- 0A2B80
15 05 C7 17 12 3E C5 2E 05 89 16 F2 3E C5 2E 05 -- 0A2B90
F6 06 8B 2E 16 EE 3E C5 2E 10 76 FF 12 76 FF 00 -- 0A2BA0
83 00 64 5B B4 9A 50 52 05 03 16 F8 16 8B 2E 16 -- 0A2BB0
3E C5 2E 1D 7D 15 FE 7E 83 00 00 FE 46 C7 08 C4 -- 0A2BC0
03 16 F6 3E 8B 2E 0B 75 00 3D 80 FE 7E 03 16 F6 -- 0A2BD0
14 36 FF 2E 01 6A DD EB FE 46 FF 20 05 C6 FE 7E -- 0A2BE0
00 64 02 97 9A 35 FF 0A 7E C5 17 12 36 FF 2E 17 -- 0A2BF0
57 56 CB 5E 5F C9 00 14 F4 B3 9A 08 C4 83 01 FE -- 0A2C00
7E 83 FE 46 89 05 8B 16 EE 3E C5 2E 00 00 02 C8 -- 0A2C10
FF 20 05 C6 FE 7E 03 16 F6 3E C5 2E 10 7D 15 FE -- 0A2C20
2E 16 EE 3E C5 2E 0A 76 FF 0C 76 FF EA EB FE 46 -- 0A2C30
5B B4 9A 50 52 05 03 16 F8 16 8B 2E 16 F6 06 8B -- 0A2C40
1D 7D 15 FE 7E 83 00 00 FE 46 C7 08 C4 83 00 64 -- 0A2C50
3E 8B 2E 0B 75 00 3D 80 FE 7E 03 16 F6 3E C5 2E -- 0A2C60
2E 01 6A DD EB FE 46 FF 20 05 C6 FE 7E 03 16 F6 -- 0A2C70
35 FF 16 F2 3E C5 2E 17 12 36 FF 2E 17 14 36 FF -- 0A2C80
8B 55 57 56 CB 5E 5F C9 08 C4 83 00 64 02 97 9A -- 0A2C90
9A 00 6A 35 FF 16 F2 3E C5 2E 03 39 68 03 6A EC -- 0A2CA0
EC 8B 55 57 56 CB 5E 5F C9 08 C4 83 00 64 00 13 -- 0A2CB0
13 9A 01 6A 35 FF 16 F2 3E C5 2E 03 39 68 03 6A -- 0A2CC0
2E EC 8B 55 57 56 CB 5E 5F C9 08 C4 83 00 64 00 -- 0A2CD0
C5 2E 02 C4 83 00 64 03 1B 9A 35 FF 16 F2 3E C5 -- 0A2CE0
EC 8B 55 57 56 CB 5E 5F C9 FF FF 05 C7 16 F2 3E -- 0A2CF0
05 75 04 3B 26 06 45 8B 0A 7E C5 16 F2 36 C4 2E -- 0A2D00
00 6C 2B C8 00 CB 5E 5F C9 C0 2B 02 EB 00 01 B8 -- 0A2D10
00 6C 2B 41 00 6C 2B 3A 00 6C 2B 64 00 6C 2B 60 -- 0A2D20
00 6C 2B 5A 00 6C 2B 53 00 6C 2B 4E 00 6C 2B 49 -- 0A2D30
6A 00 01 FE 46 C7 00 00 02 C8 57 56 00 6C 2B 62 -- 0A2D40
C4 36 FF 2E 04 6A 0A 6A 03 6A 50 FE 46 8D 16 02 -- 0A2D50
7E C5 10 C4 83 00 5C A5 FF 9A 19 C2 36 FF 2E 19 -- 0A2D60
FE 46 C7 00 00 02 C8 57 56 CB 5E 5F C9 05 89 0A -- 0A2D70
2E 04 6A 0A 6A 03 6A 50 FE 46 8D 16 02 6A 00 02 -- 0A2D80
C4 83 00 5C A5 FF 9A 19 C6 36 FF 2E 19 C8 36 FF -- 0A2D90
00 00 04 C8 57 56 CB 5E 5F C9 05 89 0A 7E C5 10 -- 0A2DA0
46 8D 16 04 6A FE 46 89 0A 46 8B 00 03 FC 46 C7 -- 0A2DB0
36 FF 2E 19 CC 36 FF 2E 04 6A 0A 6A 03 6A 50 FC -- 0A2DC0
C9 05 89 0C 7E C5 10 C4 83 00 5C A5 FF 9A 19 CA -- 0A2DD0
46 8B 00 04 FC 46 C7 00 00 04 C8 57 56 CB 5E 5F -- 0A2DE0
6A 0A 6A 03 6A 50 FC 46 8D 16 04 6A FE 46 89 0A -- 0A2DF0
A5 FF 9A 19 CE 36 FF 2E 19 D0 36 FF 2E 04 01 FE -- 0A2E00
57 56 CB 5E 5F C9 05 89 0C 7E C5 10 C4 83 00 5C -- 0A2E10
76 FF 0C 76 FF 2C 6A 00 05 CE 46 C7 00 00 32 C8 -- 0A2E20
46 8B 0A C4 83 00 64 58 BA 9A 50 D0 46 8D 16 0A -- 0A2E30
6A 0A 6A 03 6A 50 CE 46 8D 16 31 6A FD 46 89 0E -- 0A2E40
00 5C A5 FF 9A 19 D2 36 FF 2E 19 D4 36 FF 2E 04 -- 0A2E50
```

```
32 C8 57 56 CB 5E 5F C9 05 89 10 7E C5 10 C4 83 -- 0A2E60
16 0A 76 FF 0C 76 FF 2C 6A 00 06 CE 46 C7 00 00 -- 0A2E70
89 0E 46 8B 0A C4 83 00 64 58 BA 9A 50 D0 46 8D -- 0A2E80
2E 04 6A 0A 6A 03 6A 50 CE 46 8D 16 31 6A FD 46 -- 0A2E90
C4 83 00 5C A5 FF 9A 19 D6 36 FF 2E 19 D8 36 FF -- 0A2EA0
00 00 92 C8 57 56 CB 5E 5F C9 05 89 10 7E C5 10 -- 0A2EB0
76 FF 50 FF 70 86 8D 16 57 56 00 07 FF 6E 86 C7 -- 0A2EC0
0C 76 FF 5E 5F 00 5C FE EC 9A 64 6A 0A 76 FF 0C -- 0A2ED0
64 5B B4 9A 50 D4 46 8D 16 50 00 67 05 0A 46 8B -- 0A2EE0
FF 2E 2E 74 00 00 BB BD 80 0A 7E C5 08 C4 83 00 -- 0A2EF0
5A 60 9A 50 D4 46 8D 16 19 DA 36 FF 2E 19 DC 36 -- 0A2F00
16 50 00 BB 05 0A 46 8B 0C 76 FF 08 C4 83 00 64 -- 0A2F10
16 00 92 68 08 C4 83 00 64 5A 60 9A 50 D4 46 8D -- 0A2F20
19 E0 36 FF 2E 04 6A 0A 6A 03 6A 50 FF 6E 86 8D -- 0A2F30
0E 7E C5 10 C4 83 00 5C A5 FF 9A 19 DE 36 FF 2E -- 0A2F40
FF 6E 86 C7 00 00 92 C8 57 56 CB 5E 5F C9 05 89 -- 0A2F50
0A 76 FF 0C 76 FF 50 FF 70 86 8D 16 57 56 00 08 -- 0A2F60
05 0A 46 8B 0C 76 FF 5E 5F 00 5C FE EC 9A 64 6A -- 0A2F70
08 C4 83 00 64 5B B4 9A 50 D4 46 8D 16 50 00 67 -- 0A2F80
2E 19 E4 36 FF 2E 2E 74 00 00 BB BD 80 0A 7E C5 -- 0A2F90
C4 83 00 64 5A 60 9A 50 D4 46 8D 16 19 E2 36 FF -- 0A2FA0
50 D4 46 8D 16 50 00 BB 05 0A 46 8B 0C 76 FF 08 -- 0A2FB0
FF 6E 86 8D 16 00 92 68 08 C4 83 00 64 5A 60 9A -- 0A2FC0
E6 36 FF 2E 19 E8 36 FF 2E 04 6A 0A 6A 03 6A 50 -- 0A2FD0
5F C9 05 89 0E 7E C5 10 C4 83 00 5C A5 FF 9A 19 -- 0A2FE0
2E 48 00 6C 2E 3C 00 6C 2E 30 00 6C 2E 24 CB 5E -- 0A2FF0
00 6C 2E 6C 00 6C 2E 60 00 6C 2E 54 00 6C 01 FE -- 0A3000
0E C8 57 56 00 6C 2E 7C 00 6C 2E 7A 00 6C 2E 6E -- 0A3010
9E 3E F7 2E 99 05 8B 05 FF 1C 9A 3E C5 2E 00 00 -- 0A3020
00 03 3D 05 8B 1C A0 3E C5 2E FC 56 89 15 89 1C -- 0A3030
03 75 02 FA 7E 83 00 00 FA 46 C7 01 46 E9 03 74 -- 0A3040
05 EB 1C A4 3E C5 2E 07 75 00 FA 7E 83 02 50 E9 -- 0A3050
0D 05 8B F7 46 88 00 08 0D 05 8B 1C A8 3E C5 2E -- 0A3060
2A F3 46 88 C0 2B 50 FE 46 8D 16 F6 46 88 00 F8 -- 0A3070
1E 8E 2E 1C AC 3E 03 2E F8 8B 03 FC 46 6B 50 E4 -- 0A3080
88 00 10 B8 50 E4 2A F4 46 88 E4 2A 05 8A 1C AE -- 0A3090
E4 2A F7 46 8A 50 E4 2A F6 46 8A 50 E4 2A F5 46 -- 0A30A0
2A F9 46 88 C0 2B 50 E4 2A F8 46 88 00 01 B8 50 -- 0A30B0
16 16 C4 83 00 64 40 D0 9A 01 4F 68 09 6A 50 E4 -- 0A30C0
03 FC 46 6B 50 E4 2A F3 46 88 C0 2B 50 FE 46 8D -- 0A30D0
2A 01 45 8A 1C AE 1E 8E 2E 1C AC 3E 03 2E F8 8B -- 0A30E0
50 E4 2A F5 46 88 00 10 B8 50 E4 2A F4 46 88 E4 -- 0A30F0
88 00 02 B8 50 E4 2A F7 46 8A 50 E4 2A F6 46 8A -- 0A3100
68 09 6A 50 E4 2A F9 46 88 C0 2B 50 E4 2A F8 46 -- 0A3110
2B 50 FE 46 8D 16 16 C4 83 00 64 40 D0 9A 01 4F -- 0A3120
3E 03 2E F8 8B 03 FC 46 6B 50 E4 2A F3 46 88 C0 -- 0A3130
2A F4 46 88 E4 2A 02 45 8A 1C AE 1E 8E 2E 1C AC -- 0A3140
E4 2A F6 46 8A 50 E4 2A F5 46 88 00 10 B8 50 E4 -- 0A3150
50 E4 2A F8 46 88 00 03 B8 50 E4 2A F7 46 8A 50 -- 0A3160
40 D0 9A 01 4F 68 09 6A 50 E4 2A F9 46 88 C0 2B -- 0A3170
C6 80 F7 46 C6 FE BF E9 FA 46 FF 16 C4 83 00 64 -- 0A3180
50 E4 2A F3 46 88 C0 2B 50 FE 46 8D 16 F8 F6 46 -- 0A3190
1C AE 1E 8E 2E 1C AC 3E 03 2E F8 8B 03 FC 46 6B -- 0A31A0
F5 46 88 00 01 B8 50 E4 2A F4 46 88 E4 2A 05 8A -- 0A31B0
B8 50 E4 2A F7 46 8A 50 E4 2A F6 46 8A 50 E4 2A -- 0A31C0
50 E4 2A F9 46 88 C0 2B 50 E4 2A F8 46 88 00 01 -- 0A31D0
46 8D 16 16 C4 83 00 64 40 D0 9A 01 4F 68 09 6A -- 0A31E0
F8 8B 03 FC 46 6B 50 E4 2A F3 46 88 C0 2B 50 FE -- 0A31F0
```

```
2A 01 45 8A 1C AE 1E 8E 2E 1C AC 3E 03 2E 01 FE -- 0A3200
50 E4 2A F5 46 88 00 01 B8 50 E4 2A F4 46 88 E4 -- 0A3210
88 00 02 B8 50 E4 2A F7 46 8A 50 E4 2A F6 46 8A -- 0A3220
68 09 6A 50 E4 2A F9 46 88 C0 2B 50 E4 2A F8 46 -- 0A3230
2B 50 FE 46 8D 16 16 C4 83 00 64 40 D0 9A 01 4F -- 0A3240
3E 03 2E F8 8B 03 FC 46 6B 50 E4 2A F3 46 88 C0 -- 0A3250
2A F4 46 88 E4 2A 02 45 8A 1C AE 1E 8E 2E 1C AC -- 0A3260
E4 2A F6 46 8A 50 E4 2A F5 46 88 00 01 B8 50 E4 -- 0A3270
50 E4 2A F8 46 88 00 03 B8 50 E4 2A F7 46 8A 50 -- 0A3280
40 D0 9A 01 4F 68 09 6A 50 E4 2A F9 46 88 C0 2B -- 0A3290
74 00 04 3D 05 8B 1C A0 3E C5 2E 16 C4 83 00 64 -- 0A32A0
9E 21 9A 07 75 00 01 3D 05 8B 1C B0 3E C5 2E 13 -- 0A32B0
33 16 00 CB 5E 5F C9 00 5C DC 3F 9A 05 EB 00 44 -- 0A32C0
00 3C 91 10 00 3C 91 0E 00 3C B3 24 00 08 00 6C -- 0A32D0
46 C7 00 02 1C C8 57 56 00 3C 86 9A 00 6C 32 FE -- 0A32E0
FA 46 C7 00 04 F8 46 C7 00 02 F6 46 C7 00 01 F4 -- 0A32F0
C5 0A 75 1A 46 0B 1C 46 8B 00 FD E5 86 C6 00 08 -- 0A3300
7E 83 00 00 FE 46 C7 01 69 E9 FF FF 05 C7 1E 7E -- 0A3310
1F 16 FD 03 E7 D1 FE 7E 8B 00 9A E9 03 7C 04 FE -- 0A3320
C6 FE 7E 03 1F 16 FD 8B 77 74 F4 45 23 18 46 8B -- 0A3330
09 E0 C1 FE 46 8B 50 FD F4 86 8D 16 01 FD EC 85 -- 0A3340
08 C4 83 00 64 1E 52 9A 50 52 16 56 8B 14 46 03 -- 0A3350
FD F0 86 89 12 56 8B 10 46 03 09 E0 C1 FE 46 8B -- 0A3360
3B 7D 01 00 FC 7E 81 00 00 FC 46 C7 FD F2 96 89 -- 0A3370
D1 3D 8B FD F2 9E 8E FD F0 BE 03 E7 D1 FC 7E 8B -- 0A3380
03 08 E7 C1 FE 7E 8B FD F4 85 8B 1F 16 FD 03 E7 -- 0A3390
8B CA EB FC 46 FF 05 88 1C 5E 8E 1A 7E 03 FC 7E -- 0A33A0
5D E9 FE 46 FF 00 FD EC 85 C6 FE 7E 03 1F 16 FD -- 0A33B0
2B FD E8 B6 FF FD EA B6 FF 1E 76 FF 20 76 FF FF -- 0A33C0
FF 0C 76 FF 1A 76 FF 1C 76 FF 50 FD E6 86 89 C0 -- 0A33D0
03 F7 68 0C 6A 0E 76 FF 50 FD EC 86 8D 16 0A 76 -- 0A33E0
0C 74 00 3D 83 1E 7E C5 1C C4 83 00 64 40 D0 9A -- 0A33F0
46 C7 76 EB 02 C4 83 00 2C D0 F8 9A 35 FF 01 FE -- 0A3400
FD 03 E7 D1 FE 7E 8B 69 7D 04 FE 7E 83 00 00 FE -- 0A3410
8B 1F 40 36 C4 2E 53 74 18 46 23 F4 45 8B 1F 16 -- 0A3420
3D 74 04 23 26 F4 45 8B 1F 16 FD 03 E7 D1 FE 7E -- 0A3430
46 8B FD E8 B6 FF FD EA B6 FF 1E 76 FF 20 76 FF -- 0A3440
6A FE 76 FF 50 52 16 56 8B 14 46 03 09 E0 C1 FE -- 0A3450
40 D0 9A 01 45 68 09 6A 50 E4 2A FD E5 86 8A 03 -- 0A3460
FE 46 FF 85 75 00 3D 83 1E 7E C5 16 C4 83 00 64 -- 0A3470
46 C7 00 00 1C C8 57 56 CB 5E 5F C9 C0 2B 91 EB -- 0A3480
81 00 00 FC 46 C7 EC 5E D9 9B EE D9 9B 00 00 FE -- 0A3490
7E 03 E7 D1 FE 7E 8B 00 C5 E9 03 7C 01 00 FC 7E -- 0A34A0
7F FA 46 3B FC 46 8B FA 46 89 05 8B 0C 5E 8E 0A -- 0A34B0
F9 9A 00 5C ED 99 9A EC 46 D8 9B FE 46 DF 9B 27 -- 0A34C0
7E 03 E7 D1 FC 46 FF FC 7E 8B 08 C4 83 00 5C ED -- 0A34D0
7E 03 E7 D1 47 FE 7E 8B B7 EB 05 89 10 5E 8E 0E -- 0A34E0
7F F8 46 3B FC 46 8B F8 46 89 05 8B 0C 5E 8E 0A -- 0A34F0
5E D9 9B F8 46 DF 9B F4 5E D9 9B FA 46 DF 9B 42 -- 0A3500
D9 9B 52 EB 00 01 B8 05 75 F8 46 3B FA 46 8B F0 -- 0A3510
D8 9B FC 46 DF 9B E4 5E DD 9B F4 66 D8 9B F0 46 -- 0A3520
EC 5E D9 9B 1F 44 06 DC 2E 9B E4 76 DC 9B F4 66 -- 0A3530
FF 4F E9 03 74 00 FF FE 7E 81 FE 46 FF FF 7E E9 -- 0A3540
03 E7 D1 FC 7E 8B FF 45 E9 03 7C 01 00 FC 7E 81 -- 0A3550
C0 2B E2 EB FC 46 FF 00 FF 05 C7 10 5E 8E 0E 7E -- 0A3560
00 00 00 00 00 00 00 3C 6E 84 00 CB 5E 5F C9 9B -- 0A3570
46 DD 9B 00 00 FE 46 C7 00 00 0C C8 57 56 3F E0 -- 0A3580
46 8D 16 F6 5E D9 9B 14 46 DD 9B FA 5E D9 9B 0C -- 0A3590

01 30 68 06 6A 08 6A 01 6A 02 6A 00 80 68 50 FE -- 0A35A0
```

718

```
76 FF 0B 74 00 FE 7E 83 10 C4 83 00 64 40 D0 9A -- 0A35B0
16 F4 46 88 0A 46 8B 02 C4 83 00 64 59 DC 9A FE -- 0A35C0
9A 6E 6A 05 6A 01 6A 50 F4 46 8D 16 50 FE 46 8D -- 0A35D0
FE 76 FF 0B 74 00 FE 7E 83 0E C4 83 00 64 40 D0 -- 0A35E0
6A 08 6A 50 FE 46 8D 16 02 C4 83 00 64 59 DC 9A -- 0A35F0
7E 83 0A C4 83 00 64 40 D0 9A 01 2F 68 03 01 FE -- 0A3600
16 02 C4 83 00 64 59 DC 9A FE 76 FF 0B 74 00 FE -- 0A3610
01 6A 50 FA 46 8D 16 50 F6 46 8D 16 50 FE 46 8D -- 0A3620
FE 7E 83 12 C4 83 00 64 40 D0 9A 00 CA 68 07 6A -- 0A3630
C9 9B 02 C4 83 00 64 59 DC 9A FE 76 FF 0B 74 00 -- 0A3640
DD 9B 00 00 FE 46 C7 00 00 0C C8 57 56 CB 5E 5F -- 0A3650
8D 16 F6 5E D9 9B 14 46 DD 9B FA 5E D9 9B 0C 46 -- 0A3660
30 68 06 6A 08 6A 01 6A 02 6A 00 80 68 50 FE 46 -- 0A3670
FF 0B 74 00 FE 7E 83 10 C4 83 00 64 40 D0 9A 01 -- 0A3680
F4 46 88 0A 46 8B 02 C4 83 00 64 59 DC 9A FE 76 -- 0A3690
6E 6A 05 6A 01 6A 50 F4 46 8D 16 50 FE 46 8D 16 -- 0A36A0
76 FF 0B 74 00 FE 7E 83 0E C4 83 00 64 40 D0 9A -- 0A36B0
08 6A 50 FE 46 8D 16 02 C4 83 00 64 59 DC 9A FE -- 0A36C0
FE 7E 83 0A C4 83 00 64 40 D0 9A 01 2F 68 03 6A -- 0A36D0
8D 16 02 C4 83 00 64 59 DC 9A FE 76 FF 0B 74 00 -- 0A36E0
6A 01 6A 50 FA 46 8D 16 50 F6 46 8D 16 50 FE 46 -- 0A36F0
00 FE 7E 83 12 C4 83 00 64 40 D0 9A 00 CA 68 07 -- 0A3700
5F C9 9B 02 C4 83 00 64 59 DC 9A FE 76 FF 0B 74 -- 0A3710
46 DD 9B 00 00 FE 46 C7 00 00 0C C8 57 56 CB 5E -- 0A3720
46 8D 16 F6 5E D9 9B 16 46 DD 9B FA 5E D9 9B 0E -- 0A3730
01 30 68 06 6A 08 6A 01 6A 02 6A 0C 76 FF 50 FE -- 0A3740
76 FF 0B 74 00 FE 7E 83 10 C4 83 00 64 40 D0 9A -- 0A3750
16 F4 46 88 0A 46 8B 02 C4 83 00 64 59 DC 9A FE -- 0A3760
9A 6E 6A 05 6A 01 6A 50 F4 46 8D 16 50 FE 46 8D -- 0A3770
FE 76 FF 0B 74 00 FE 7E 83 0E C4 83 00 64 40 D0 -- 0A3780
6A 08 6A 50 FE 46 8D 16 02 C4 83 00 64 59 DC 9A -- 0A3790
00 FE 7E 83 0A C4 83 00 64 40 D0 9A 01 2F 68 03 -- 0A37A0
46 8D 16 02 C4 83 00 64 59 DC 9A FE 76 FF 0B 74 -- 0A37B0
07 6A 01 6A 50 FA 46 8D 16 50 F6 46 8D 16 50 FE -- 0A37C0
74 00 FE 7E 83 12 C4 83 00 64 40 D0 9A 00 CA 68 -- 0A37D0
5E 5F C9 9B 02 C4 83 00 64 59 DC 9A FE 76 FF 0B -- 0A37E0
FF 2E 23 C6 36 FF 2E 57 56 EC 8B 55 57 56 00 CB -- 0A37F0
5F 00 8C 00 02 9A 00 CA 68 00 6A 23 C4 36 01 FE -- 0A3800
36 FF 2E 23 CC 36 FF 2E 23 CE 36 FF 2E 66 6A 5E -- 0A3810
2E 0A C4 83 00 5C ED 6E 9A 23 C8 36 FF 2E 23 CA -- 0A3820
FF 2E 23 C6 36 FF 2E 23 D0 36 FF 2E 23 D2 36 FF -- 0A3830
56 CB 5E 5F C9 08 C4 83 00 64 5B B4 9A 23 C4 36 -- 0A3840
3D FE 46 89 05 8B 23 D4 3E C5 2E 00 00 04 C8 57 -- 0A3850
22 36 A7 FF 2E D8 8B E0 D1 00 99 E9 03 76 00 09 -- 0A3860
22 C6 22 92 22 86 22 7A 22 6E 22 62 22 56 22 4A -- 0A3870
5E EB 23 D8 36 FF 2E 23 DA 36 FF 2E 22 AA 22 9E -- 0A3880
E2 36 FF 2E 52 EB 23 DC 36 FF 2E 23 DE 36 FF 2E -- 0A3890
36 FF 2E 23 E6 36 FF 2E 46 EB 23 E0 36 FF 2E 23 -- 0A38A0
2E EB 23 E8 36 FF 2E 23 EA 36 FF 2E 3A EB 23 E4 -- 0A38B0
F2 36 FF 2E 22 EB 23 EC 36 FF 2E 23 EE 36 FF 2E -- 0A38C0
36 FF 2E 23 F6 36 FF 2E 16 EB 23 F0 36 FF 2E 23 -- 0A38D0
FF 2E 23 F8 36 FF 2E 23 FA 36 FF 2E 0A EB 23 F4 -- 0A38E0
08 C4 83 00 64 5B B4 9A 23 C4 36 FF 2E 23 C6 36 -- 0A38F0
9A 23 C4 36 FF 2E 23 C6 36 FF 2E 50 FC 46 8D 16 -- 0A3900
6A 00 6A 13 74 00 FC 7E 83 08 C4 83 00 64 18 8A -- 0A3910
0A C4 83 00 64 28 52 9A FC 76 FF 00 6A 00 6A 00 -- 0A3920
2E 50 FE 46 8D 16 00 00 02 C8 57 56 CB 5E 5F C9 -- 0A3930

C4 83 00 64 19 26 9A 23 C4 36 FF 2E 23 C6 36 FF -- 0A3940
FF 00 6A 00 6A 00 6A 00 6A 13 74 00 FE 7E 83 08 -- 0A3950
```

719

```
57 56 CB 5E 5F C9 0A C4 83 00 64 28 52 9A FE 76 -- 0A3960
FF 2E 23 C6 36 FF 2E 50 FE 46 8D 16 00 00 02 C8 -- 0A3970
74 00 FE 7E 83 08 C4 83 00 64 18 8A 9A 23 C4 36 -- 0A3980
64 28 52 9A FE 76 FF 00 6A 00 6A 00 6A 00 6A 13 -- 0A3990
FF 2E 00 00 02 C8 57 56 CB 5E 5F C9 0A C4 83 00 -- 0A39A0
36 FF 2E 23 C6 36 FF 2E 23 FC 36 FF 2E 23 FE 36 -- 0A39B0
2E 50 FE 46 8D 16 08 C4 83 00 64 5B B4 9A 23 C4 -- 0A39C0
C4 83 00 64 18 8A 9A 23 C4 36 FF 2E 23 C6 36 FF -- 0A39D0
FF 00 6A 00 6A 00 6A 00 6A 13 74 00 FE 7E 83 08 -- 0A39E0
21 FE CB 5E 5F C9 0A C4 83 00 64 28 52 9A FE 76 -- 0A39F0
00 6C 21 9A 00 3C 86 A2 00 6C 22 62 00 6C 01 FE -- 0A3A00
00 6C 21 AC 00 6C 21 A0 00 6C 21 9D 00 3C 86 9A -- 0A3A10
00 6C 21 D7 00 6C 21 C8 00 6C 21 C1 00 6C 21 B9 -- 0A3A20
0A C8 57 56 00 6C 21 FB 00 6C 21 F2 00 6C 21 EA -- 0A3A30
00 5C C0 7A 9A 50 FA 46 8D 16 03 6A 57 56 00 00 -- 0A3A40
36 FF 2E 26 2A 36 FF 2E 50 57 56 FC 46 89 5E 5F -- 0A3A50
5E 5F 00 5C C0 BA 9A 50 FA 46 8D 16 FF 6A 26 28 -- 0A3A60
89 F6 46 89 02 C4 83 00 64 5D 04 9A 50 FE 46 89 -- 0A3A70
E0 D1 00 A2 E9 03 76 00 08 3D 48 0A 46 8B F8 56 -- 0A3A80
B3 24 A5 24 98 24 8A 24 72 24 5B A7 FF 2E D8 8B -- 0A3A90
24 6A 00 85 E9 C0 2B 24 E7 24 DA 24 CD 24 C0 24 -- 0A3AA0
5C ED 6E 9A 0C 76 FF 0E 76 FF F6 76 FF F8 76 FF -- 0A3AB0
24 05 F6 46 8B F8 76 FF 0A 6A E3 EB 0A C4 83 00 -- 0A3AC0
EB 00 2E 05 F6 46 8B F8 76 FF 10 6A E2 EB 50 00 -- 0A3AD0
6A E2 EB 00 3E 05 F6 46 8B F8 76 FF 04 3E 68 F0 -- 0A3AE0
76 FF 04 6A D5 EB 04 7C 05 F6 46 8B F8 76 FF 02 -- 0A3AF0
46 8B F8 76 FF 08 6A C8 EB 04 7E 05 F6 46 8B F8 -- 0A3B00
8A 05 F6 46 8B F8 76 FF 02 6A BB EB 04 82 05 F6 -- 0A3B10
A1 EB 04 8C 05 F6 46 8B F8 76 FF 02 6A AE EB 04 -- 0A3B20
6A 57 56 00 00 0A C8 57 56 CB 5E 5F C9 00 01 B8 -- 0A3B30
FC 46 89 5E 5F 00 5C C0 7A 9A 50 FA 46 8D 16 03 -- 0A3B40
16 FF 6A 26 28 36 FF 2E 26 2A 36 FF 2E 50 57 56 -- 0A3B50
9A 50 FE 46 89 5E 5F 00 5C C0 BA 9A 50 FA 46 8D -- 0A3B60
0A 46 8B F8 56 89 F6 46 89 02 C4 83 00 64 5D 04 -- 0A3B70
A7 FF 2E D8 8B E0 D1 00 D3 E9 03 76 00 08 3D 48 -- 0A3B80
25 E6 25 D3 25 C0 25 AC 25 99 25 85 25 6D 25 56 -- 0A3B90
76 FF 0E 76 FF 24 6A 00 B6 E9 C0 2B 26 0C 25 F9 -- 0A3BA0
EB 0A C4 83 00 5C ED 6E 9A F6 76 FF F8 76 FF 0C -- 0A3BB0
05 F6 46 8B F8 76 FF 0C 76 FF 0E 76 FF 0A 6A E3 -- 0A3BC0
F8 76 FF 0C 76 FF 0E 76 FF 10 6A E2 EB 50 00 24 -- 0A3BD0
76 FF 0E 76 FF 04 3E 68 EA EB 00 2E 05 F6 46 8B -- 0A3BE0
76 FF 02 6A D6 EB 00 3E 05 F6 46 8B F8 76 FF 0C -- 0A3BF0
EB 04 7C 05 F6 46 8B F8 76 FF 0C 76 FF 0E 01 FE -- 0A3C00
05 F6 46 8B F8 76 FF 0C 76 FF 0E 76 FF 04 6A C3 -- 0A3C10
8B F8 76 FF 0C 76 FF 0E 76 FF 08 6A B0 EB 04 7E -- 0A3C20
FF 0C 76 FF 0E 76 FF 02 6A 9D EB 04 82 05 F6 46 -- 0A3C30
FF 0E 76 FF 02 6A 8A EB 04 8A 05 F6 46 8B F8 76 -- 0A3C40
01 B8 FF 76 E9 04 8C 05 F6 46 8B F8 76 FF 0C 76 -- 0A3C50
00 00 26 C8 57 56 00 6C 33 B2 00 CB 5E 5F C9 00 -- 0A3C60
7E C5 77 7D 00 04 7D 83 0A 7E C5 00 00 EE 46 C7 -- 0A3C70
14 45 D9 9B 0A 7E C5 F8 5E D9 9B 10 45 D9 9B 0A -- 0A3C80
50 9A 50 F8 46 8D 16 50 F0 46 8D 16 FC 5E D9 9B -- 0A3C90
9A 00 5C ED 99 9A F0 46 D9 9B 08 C4 83 00 34 EF -- 0A3CA0
8B 0A 7E C5 05 89 0A 7E C5 08 C4 83 00 5C ED F9 -- 0A3CB0
F4 46 D9 9B 15 01 0A 7E C5 28 34 3E F7 2E 99 05 -- 0A3CC0
0A 7E C5 08 C4 83 00 5C ED F9 9A 00 5C ED 99 9A -- 0A3CD0

C5 28 34 3E F7 2E 99 02 45 8B 0A 7E C5 02 45 89 -- 0A3CE0
00 5C 29 2E 9A 0A 76 FF 0C 76 FF 02 55 01 0A 7E -- 0A3CF0
3A 3E C5 2E 4E 7D 00 04 7D 83 0A 7E C5 04 C4 83 -- 0A3D00
```

720

```
28 36 3E C5 2E 0A 76 C4 DA 5E D9 9B 05 D9 9B 28 -- 0A3D10
9B 0E 7E C5 DA 4E D8 9B 10 44 D8 26 9B 05 D9 9B -- 0A3D20
76 C4 DA 5E D9 9B 05 D9 9B 28 42 3E C5 2E 1D D9 -- 0A3D30
D8 9B 14 44 D8 26 9B 05 D9 9B 28 3E 3E C5 2E 0A -- 0A3D40
16 50 EE 46 8D 16 31 EB 1D D9 9B 12 7E C5 DA 4E -- 0A3D50
9A 03 EE 68 06 6A 0A 76 FF 0C 76 FF 50 E6 46 8D -- 0A3D60
D9 9B 0E 7E C5 E6 46 DB 9B 10 C4 83 00 64 40 D0 -- 0A3D70
28 46 3E C5 2E 1D D9 9B 12 7E C5 EA 46 DB 9B 1D -- 0A3D80
DD 9B EE D9 9B E4 56 89 E2 46 89 02 55 8B 05 8B -- 0A3D90
ED 94 9A DA 5E DC 9B 10 45 D9 9B 0A 7E C5 DA 5E -- 0A3DA0
D9 9B 0E 7E C5 3C 45 DB 9B E2 7E C5 0F 77 00 5C -- 0A3DB0
9B 10 45 D9 9B 0A 7E C5 28 4A 36 C4 2E 41 EB 1D -- 0A3DC0
E2 7E C5 E2 76 C4 2A 72 00 5C ED 94 9A 1C D8 26 -- 0A3DD0
01 2D 0E 54 13 26 0C 44 03 26 3E 55 8B 3C 45 8B -- 0A3DE0
7E C5 04 C4 83 00 5C ED C3 9A 50 52 00 DA 83 00 -- 0A3DF0
0A 7E C5 DA 5E DD 9B EE D9 9B 1D D9 9B 0E 01 FE -- 0A3E00
C5 0F 77 00 5C ED 94 9A DA 5E DC 9B 14 45 D9 9B -- 0A3E10
C4 2E 41 EB 1D D9 9B 12 7E C5 38 45 DB 9B E2 7E -- 0A3E20
94 9A 1C D8 26 9B 14 45 D9 9B 0A 7E C5 28 4E 36 -- 0A3E30
55 8B 38 45 8B E2 7E C5 E2 76 C4 2A 72 00 5C ED -- 0A3E40
52 00 DA 83 00 01 2D 0A 54 13 26 08 44 03 26 3A -- 0A3E50
9B 1D D9 9B 12 7E C5 04 C4 83 00 5C ED C3 9A 50 -- 0A3E60
90 8C 00 3C 90 98 00 3C 90 88 00 02 CB 5E 5F C9 -- 0A3E70
90 7E 00 3C 90 7A 00 3C 90 82 00 3C 90 9C 00 3C -- 0A3E80
F0 46 C7 FF FF F2 46 C7 00 00 1C C8 57 56 00 3C -- 0A3E90
57 56 01 F1 E9 FF FF B8 06 75 00 0A 7E 83 00 00 -- 0A3EA0
46 89 5E 5F 00 5C C0 7A 9A 50 F4 46 8D 16 03 6A -- 0A3EB0
FF 6A 2A 64 36 FF 2E 2A 66 36 FF 2E 50 57 56 F6 -- 0A3EC0
56 E8 46 89 5E 5F 00 5C C0 BA 9A 50 F4 46 8D 16 -- 0A3ED0
5E 5F 00 5C BF 98 9A 50 F4 46 8D 16 F0 76 FF 57 -- 0A3EE0
05 EB 00 C0 68 57 56 07 75 0B 0C 7E 83 E6 46 89 -- 0A3EF0
5F 00 5C BF B8 9A 50 F4 46 8D 16 00 A0 68 57 56 -- 0A3F00
FC 46 89 02 C4 83 00 64 5D 04 9A 50 FA 46 89 5E -- 0A3F10
45 88 0C 46 8B 05 89 FC 7E C5 0A 46 8B FE 56 89 -- 0A3F20
0A 7E 83 3B 74 00 0E 7E 83 03 45 88 0E 46 8B 02 -- 0A3F30
12 76 FF 50 00 04 05 FC 46 8B 52 57 56 1B 75 FE -- 0A3F40
64 6A 1A EB 5E 5F 00 5C FE EC 9A 04 6A 10 76 FF -- 0A3F50
50 00 04 05 FC 46 8B FE 76 FF 10 76 FF 12 76 FF -- 0A3F60
14 6A 68 75 0B 0C 7E 83 0A C4 83 00 64 58 BA 9A -- 0A3F70
50 00 68 05 FC 46 8B FE 76 FF 14 76 FF 16 76 FF -- 0A3F80
18 76 FF 1A 76 FF 14 6A 0A C4 83 00 64 58 BA 9A -- 0A3F90
83 00 64 58 BA 9A 50 00 7C 05 FC 46 8B FE 76 FF -- 0A3FA0
FC 46 8B FE 76 FF 1C 76 FF 1E 76 FF 14 6A 0A C4 -- 0A3FB0
76 FF 14 6A 0A C4 83 00 64 58 BA 9A 50 00 90 05 -- 0A3FC0
BA 9A 50 00 A4 05 FC 46 8B FE 76 FF 20 76 FF 22 -- 0A3FD0
76 FF FA 76 FF E8 76 FF 57 56 0A C4 83 00 64 58 -- 0A3FE0
FF 57 56 5E 5F 00 5C C0 9A 9A 50 F4 46 8D 16 E6 -- 0A3FF0
F4 46 8D 16 50 EE 46 8D 16 F2 76 FF E6 76 01 FE -- 0A4000
64 5D 04 9A 50 F8 46 89 5E 5F 00 5C C0 DA 9A 50 -- 0A4010
88 05 8B EA 7E C5 EC 56 89 EA 46 89 02 C4 83 00 -- 0A4020
5C BF 78 9A 50 F4 46 8D 16 E6 76 FF 57 56 E5 46 -- 0A4030
BF D8 9A 50 F4 46 8D 16 FA 76 FF 57 56 5E 5F 00 -- 0A4040
D8 8B E0 D1 41 77 00 05 3D 0C 46 8B 5E 5F 00 5C -- 0A4050
2F 2A 2F 2A 5B 2A 2F 2A 2F 2A 5B 2A 23 A7 FF 2E -- 0A4060
2E D8 8B E0 D1 22 77 00 03 3D 48 98 E5 46 8A 2A -- 0A4070

01 0C 7E 83 2A 50 2A 50 2A 4A 2A 5B 2A 42 A7 FF -- 0A4080
E5 46 8A 02 C4 83 00 44 56 AD 9A 17 19 68 0B 74 -- 0A4090
FF EC 8B 55 57 56 00 6C 33 FA 00 CB 5E 5F C9 98 -- 0A40A0
0A 7E C5 04 C4 83 00 5C D3 78 9A 0A 76 FF 0C 76 -- 0A40B0
```

```
62  08  45  C6  72  07  45  C6  69  06  45  C6  61  05  45  C6  --  0A40C0
03  2E  12  05  6B  2C  60  3E  C5  2E  57  0C  76  FF  12  6A  --  0A40D0
83  00  5C  ED  6E  9A  50  52  2C  66  16  8B  2E  2C  64  06  --  0A40E0
C8  57  56  CB  5E  5F  C9  05  FF  2C  60  3E  C5  2E  0A  C4  --  0A40F0
83  2C  60  3E  C5  2E  00  00  05  C7  0A  7E  C5  00  00  02  --  0A4100
46  8B  2C  60  3E  C5  2E  00  00  FE  46  C7  50  7E  00  3D  --  0A4110
2C  64  3E  03  2E  F8  8B  12  FE  46  6B  3F  7D  05  3B  FE  --  0A4120
FE  46  6B  00  6A  24  74  2E  03  7D  80  2C  66  1E  8E  2E  --  0A4130
36  FF  2E  50  52  2C  66  16  8B  2E  2C  64  06  03  2E  12  --  0A4140
FF  0A  C4  83  00  5C  94  FB  9A  2C  68  36  FF  2E  2C  6A  --  0A4150
83  00  64  2B  34  9A  0A  76  FF  0C  76  FF  B5  EB  FE  46  --  0A4160
2C  60  3E  C5  2E  EC  8B  55  57  56  CB  5E  5F  C9  04  C4  --  0A4170
FF  12  6A  EC  8B  55  57  56  CB  5E  5F  C9  00  00  05  C7  --  0A4180
06  03  2E  12  05  6B  2C  60  3E  C5  2E  0A  76  FF  0C  76  --  0A4190
C4  83  00  5C  ED  6E  9A  50  52  2C  66  16  8B  2E  2C  64  --  0A41A0
8B  55  57  56  CB  5E  5F  C9  05  FF  2C  60  3E  C5  2E  0A  --  0A41B0
1E  C4  2E  4A  7E  00  01  3D  05  8B  2C  60  3E  C5  2E  EC  --  0A41C0
2C  64  3E  03  2E  F8  8B  12  C6  6B  4E  37  8B  26  2C  60  --  0A41D0
36  C5  2E  00  6A  2C  74  2E  03  7D  80  2C  66  1E  8E  2E  --  0A41E0
8B  2E  2C  64  06  03  2E  12  C7  6B  3C  8B  0C  FF  2C  60  --  0A41F0
68  36  FF  2E  2C  6A  36  FF  2E  50  52  2C  66  16  01  FE  --  0A4200
C8  57  56  CB  5E  5F  C9  0A  C4  83  00  5C  94  FB  9A  2C  --  0A4210
3E  C5  2E  00  00  FE  46  C7  00  00  FC  46  C7  00  00  04  --  0A4220
05  0A  46  8B  0C  76  FF  67  7D  05  3B  FE  46  8B  2C  60  --  0A4230
66  16  8B  2E  2C  64  06  03  2E  12  FE  46  6B  50  00  03  --  0A4240
64  5A  20  9A  50  00  03  05  C3  8B  51  CA  8B  D8  8B  2C  --  0A4250
FE  46  6B  00  01  FC  46  C7  33  75  C0  0B  08  C4  83  00  --  0A4260
03  45  C6  2C  66  1E  8E  2E  2C  64  3E  03  2E  F8  8B  12  --  0A4270
FF  2E  2C  6A  36  FF  2E  0A  76  FF  0C  76  FF  00  6A  2E  --  0A4280
8D  EB  FE  46  FF  0A  C4  83  00  5C  94  FB  9A  2C  68  36  --  0A4290
00  6C  16  82  00  3C  CE  38  00  3C  CE  36  CB  5E  5F  C9  --  0A42A0
8B  05  8B  0E  7E  C5  04  0E  46  83  00  00  18  C8  57  56  --  0A42B0
C7  01  A4  E9  03  75  C2  0B  FA  56  89  F8  46  89  02  55  --  0A42C0
46  8B  00  00  F0  46  C7  00  00  FE  46  C7  00  00  FC  46  --  0A42D0
98  05  8A  F8  7E  C5  EE  56  89  EC  46  89  10  56  8B  0E  --  0A42E0
80  F8  7E  8B  F8  46  FF  2D  75  00  23  3D  98  F3  46  88  --  0A42F0
02  55  8B  05  8B  EC  7E  C5  04  EC  46  83  B2  75  00  3D  --  0A4300
98  05  8A  F8  7E  C5  9C  74  C2  0B  FA  56  89  F8  46  89  --  0A4310
34  06  8B  2E  23  75  3C  F3  7E  80  F0  46  FF  F3  46  88  --  0A4320
83  F8  46  FF  FE  56  89  FC  46  89  2E  36  16  8B  2E  2E  --  0A4330
80  63  EB  2E  3C  B8  68  EB  2E  3A  B8  05  75  00  F0  7E  --  0A4340
05  2E  36  16  8B  2E  2E  34  06  8B  2E  65  75  3E  F3  7E  --  0A4350
3D  80  F8  7E  C5  F8  46  FF  FE  56  89  FC  46  89  00  12  --  0A4360
89  02  55  8B  05  8B  EC  7E  C5  04  EC  46  83  31  75  00  --  0A4370
75  3E  3D  80  F8  7E  C5  1B  74  C2  0B  FA  56  89  F8  46  --  0A4380
B8  13  EB  2E  3F  B8  05  75  00  F0  7E  83  F8  46  FF  13  --  0A4390
B8  03  EB  2E  44  B8  05  75  00  F0  7E  83  0E  EB  2E  41  --  0A43A0
FC  46  0B  FE  46  8B  F6  56  89  F4  46  89  5A  0E  2E  46  --  0A43B0
76  FF  F6  76  FF  FC  76  FF  FE  76  FF  FE  F1  E9  03  75  --  0A43C0
0B  0C  C4  83  00  64  08  0B  9A  F8  76  FF  FA  76  FF  F4  --  0A43D0
2E  FE  56  8B  FC  46  8B  F8  76  FF  FA  76  FF  48  75  C2  --  0A43E0
62  68  0E  06  75  2E  34  06  3B  2E  0D  75  2E  36  16  3B  --  0A43F0
36  FF  2E  2E  49  68  0E  2E  67  68  0E  04  EB  2E  01  FE  --  0A4400
00  5C  97  42  9A  50  00  24  05  2E  34  06  8B  2E  2E  36  --  0A4410

0E  46  8B  02  C4  83  00  64  56  DE  9A  01  6A  10  C4  83  --  0A4420
EC  46  8B  EA  56  89  E8  46  89  04  0E  6E  83  10  56  8B  --  0A4430
7E  C5  05  29  0A  7E  C5  2E  38  3E  F7  2E  99  0E  46  2B  --  0A4440
8B  04  EC  46  83  FE  5D  E9  03  75  05  0B  02  45  8B  EC  --  0A4450
05  89  04  E8  46  83  E8  7E  C5  02  55  8B  05  8B  EC  7E  --  0A4460
```

722

```
00 04 00 24 FE 8E 00 CB 5E 5F C9 D9 EB 02 55 89 -- 0A4470
63 00 62 77 00 77 00 62 61 00 61 00 62 72 00 72 -- 0A4480
25 20 74 63 65 72 69 64 65 72 20 74 6F 6E 6E 61 -- 0A4490
00 6F 74 00 6D 6F 72 66 00 0A 22 73 25 22 20 73 -- 0A44A0
2F 52 06 DD 2E 50 F8 46 8D 16 00 00 10 C8 57 56 -- 0A44B0
99 9A F0 76 DC 0A 46 DD F0 5E DD 2F 5A 0E DC 2E -- 0A44C0
F6 2B 0A 5E DD 0C C4 83 00 5C EE AE 9A 00 5C ED -- 0A44D0
BE 0E 76 00 5C ED 94 9A 2F 62 1E DC 2E 0A 46 DD -- 0A44E0
0A 46 DD 0A 5E DD 0A 6E DC 2F 62 06 DD 2E 00 01 -- 0A44F0
00 01 F6 81 0F 76 00 5C ED 94 9A 2F 6A 1E DC 2E -- 0A4500
DC 2E 0A 46 DD 0A 5E DD 0A 66 DC 2F 62 06 DD 2E -- 0A4510
DC 2F 82 06 DD 2E 34 76 00 5C ED 94 9A 2F 72 1E -- 0A4520
0A 5E DD F0 66 DC 2F 7A 06 DD 2E F0 5E DD 0A 4E -- 0A4530
5C ED 99 9A 0A 4E DC 0A 46 DD 2F 92 68 0E 07 6A -- 0A4540
DD 2E 24 EB 0A 4E DC 0E C4 83 00 64 54 B6 9A 00 -- 0A4550
DD 2F CA 68 0E 08 6A 0A 5E DD 0A 4E DC 2F 8A 06 -- 0A4560
83 00 64 54 B6 9A 00 5C ED 99 9A 0A 4E DC 0A 46 -- 0A4570
03 EB E0 D9 F8 46 DD 07 74 F6 0B F8 5E DD 0E C4 -- 0A4580
40 00 00 00 00 00 00 00 CB 5E 5F C9 9B F8 46 DD -- 0A4590
3F E0 00 00 00 00 00 00 40 09 21 FB 54 44 2D 18 -- 0A45A0
3F C0 00 00 00 00 00 00 3F D0 00 00 00 00 00 00 -- 0A45B0
40 28 00 00 00 00 00 00 40 08 00 00 00 00 00 00 -- 0A45C0
3F E0 C1 52 38 2D 73 65 40 20 00 00 00 00 00 00 -- 0A45D0
3F 35 7E 24 3E A3 FE 2C BF 98 7F B0 79 10 49 DD -- 0A45E0
3E 41 81 33 5E 08 A9 85 BE C1 F5 29 23 96 57 5C -- 0A45F0
01 CF E1 BA 49 AD BD B6 56 43 4F 84 2B 74 01 FE -- 0A4600
BD 3C C9 BE 45 DE 3F F0 00 00 00 00 00 00 3D 24 -- 0A4610
5D 3C 7E 3C 8D 5C 3F 90 3C 1F 08 1B 5A AA BF D3 -- 0A4620
6D 1E C3 D4 80 16 3E CE 1F 50 68 30 3F 23 BF 35 -- 0A4630
25 86 B9 95 81 5A 3D DF 9C C1 5D 51 4D E0 BE 5A -- 0A4640
06 DD 2E 50 F8 46 8D 16 00 00 10 C8 57 56 BD 5B -- 0A4650
F0 76 DC 0A 46 DD F0 5E DD 31 28 0E DC 2E 31 20 -- 0A4660
0A 5E DD 0C C4 83 00 5C EE AE 9A 00 5C ED 99 9A -- 0A4670
5C ED 94 9A 31 30 1E DC 2E 0A 46 DD FF 2B F6 2B -- 0A4680
46 DD 0A 5E DD 0A 6E DC 31 30 06 DD 2E 0B 76 00 -- 0A4690
00 01 BF 0E 76 00 5C ED 94 9A 31 38 1E DC 2E 0A -- 0A46A0
DC 2E 0A 46 DD 0A 5E DD 0A 66 DC 31 30 06 DD 2E -- 0A46B0
06 DD 2E 00 01 BE 0E 76 00 5C ED 94 9A 31 40 1E -- 0A46C0
0A 4E DC 31 48 06 DD 2E 0A 5E DD 0A 66 DC 31 38 -- 0A46D0
68 0E 04 6A F8 5E DD 0A 4E DC 0A 46 DD 0A 5E DD -- 0A46E0
83 00 64 54 B6 9A 00 5C ED 99 9A F8 46 DD 31 84 -- 0A46F0
99 9A F8 46 DD 31 64 68 0E 04 6A F0 5E DD 0E C4 -- 0A4700
4E DC F0 76 DC 0E C4 83 00 64 54 B6 9A 00 5C ED -- 0A4710
36 DC 2E 31 50 06 DD 2E 2C 74 F6 0B F8 5E DD 0A -- 0A4720
60 1E C5 2E 10 76 00 5C ED 94 9A F8 5E DC 31 58 -- 0A4730
76 DC E8 D9 17 EB 31 58 06 DD 2E 00 22 07 C7 31 -- 0A4740
F8 5E DD E0 D9 F8 46 DD 08 74 FF 0B F8 5E DD F8 -- 0A4750
40 00 00 00 00 00 00 00 CB 5E 5F C9 9B F8 46 DD -- 0A4760
3F E0 00 00 00 00 00 00 40 09 21 FB 54 44 2D 18 -- 0A4770
3F C0 00 00 00 00 00 00 3F D0 00 00 00 00 00 00 -- 0A4780
3F F0 00 00 00 00 00 00 40 20 00 00 00 00 00 00 -- 0A4790
64 9D FE 83 00 6C 34 08 47 9E 17 B8 43 57 69 1B -- 0A47A0
84 95 54 2A 40 93 D7 04 F4 29 BD 05 C0 CF 56 AA -- 0A47B0

36 41 DC 2C 3F 9C E2 C2 B5 7E 83 36 C0 31 22 9B -- 0A47C0
81 13 B5 52 40 B6 B9 5C 26 0A 98 A2 C0 D3 F3 63 -- 0A47D0
02 C8 57 56 3F F0 00 00 00 00 00 00 C0 66 AF C7 -- 0A47E0
FF B8 06 74 00 60 05 F7 0C 7E C5 0A 76 8B 00 00 -- 0A47F0
83 4B 75 00 08 05 F7 0C 7E C5 01 6D E9 FF 01 FE -- 0A4800
0C 76 FF 0E 76 FF 26 74 04 00 05 F7 2C 75 09 FE -- 0A4810
```

EP 0 533 348 A2

```
2E D1 74 FF FF 3D 06 C4 83 00 64 31 A4 9A 20 6A -- 0A4820
01 33 E9 00 09 B8 E0 75 00 07 05 F7 33 2E 3E C5 -- 0A4830
31 A4 9A 0D 6A 0C 76 FF 0E 76 FF 15 75 0A FE 83 -- 0A4840
01 05 F7 0C 7E C5 A6 74 FF FF 3D 06 C4 83 00 64 -- 0A4850
56 91 EB 00 20 0D 81 06 75 00 02 05 F7 4C 75 00 -- 0A4860
50 52 D2 2B 02 45 8B 01 6A 0E 75 FF 0C 7E C5 57 -- 0A4870
00 FE 7E 83 5E 5F 00 5C BE B2 9A 50 FE 46 8D 16 -- 0A4880
0C 55 8B 0A 45 8B 0C 7E C5 D2 EB 0C 7E C5 05 74 -- 0A4890
C5 00 01 0D 81 00 80 02 45 C7 08 55 89 06 45 89 -- 0A48A0
4E 56 9A 00 80 68 26 75 0A 45 0B 0C 45 8B 0C 7E -- 0A48B0
C2 0B 0C 55 89 0A 45 89 0C 7E C5 02 C4 83 00 64 -- 0A48C0
00 80 02 45 C7 08 55 89 06 45 89 0A 45 8B 97 74 -- 0A48D0
09 FD 9A 57 0E 76 FF 13 75 00 02 7D 83 0C 7E C5 -- 0A48E0
FF 0C 7E C5 FF 04 E9 03 74 C0 0B 04 C4 83 00 64 -- 0A48F0
88 C6 8B 06 47 FF 26 06 7F C5 26 0C 5E C4 02 4D -- 0A4900
2A 74 04 00 05 F7 51 75 00 08 05 F7 0C 7E C5 05 -- 0A4910
FE 83 1C EB 05 FF 33 2E 3E C5 2E 09 7C 20 FE 83 -- 0A4920
75 0D FE 83 0E EB 0D FF 33 2E 3E C5 2E 09 75 08 -- 0A4930
C5 1C 75 0A FE 83 00 00 05 C7 33 2E 3E C5 2E 09 -- 0A4940
64 09 FD 9A 57 0E 76 FF 13 74 04 00 05 F7 0C 7E -- 0A4950
8B E4 2A C6 8B FE 95 E9 03 74 C0 0B 04 C4 83 00 -- 0A4960
3C C8 57 56 00 6C 34 0A 00 CB 5E 5F C9 C6 8B F0 -- 0A4970
04 64 D8 26 9B 05 D9 9B 0A 7E C5 0A 76 C4 00 00 -- 0A4980
26 9B 0C 45 D9 9B 0A 7E C5 0A 76 C4 FC 5E D9 9B -- 0A4990
45 D9 9B 0A 7E C5 0A 76 C4 F8 5E D9 9B 10 64 D8 -- 0A49A0
0A 7E C5 0A 76 C4 F4 5E D9 9B 04 64 D8 26 9B 08 -- 0A49B0
46 D9 9B F0 5E D9 9B 10 64 D8 26 9B 14 45 D9 9B -- 0A49C0
4E D8 9B F4 46 D9 9B C4 5E DD 9B F0 4E D8 9B F0 -- 0A49D0
83 00 64 4E FE 9A 00 5C ED 99 9A C4 46 DC 9B F4 -- 0A49E0
DD 9B F8 4E D8 9B F8 46 D9 9B CC 5E DD 9B 08 C4 -- 0A49F0
D4 46 DC 9B FC 4E D8 9B FC 46 D9 9B D4 5E 01 FE -- 0A4A00
4E DC 9B 08 C4 83 00 64 4E FE 9A 00 5C ED 99 9A -- 0A4A10
5E DD 9B F0 4E D8 9B F8 46 D9 9B DC 5E DD 9B CC -- 0A4A20
76 DC 9B E4 46 DC 9B F4 4E D8 9B FC 46 D9 9B E4 -- 0A4A30
D9 9B 08 C4 83 00 64 52 FE 9A 00 5C ED 99 9A DC -- 0A4A40
5C ED 94 9A 34 AC 1E DC 2E 9B EC 46 D9 9B EC 5E -- 0A4A50
56 CB 5E 5F C9 9B C0 2B 02 EB 00 01 B8 05 73 00 -- 0A4A60
9B 0C 45 D9 9B 0A 7E C5 0A 76 C4 00 00 28 C8 57 -- 0A4A70
D9 9B 0A 7E C5 0A 76 C4 D8 5E DD 9B 10 64 D8 26 -- 0A4A80
D9 9B 0A 7E C5 E0 5E DD 9B 0C 64 D8 26 9B 14 45 -- 0A4A90
45 D9 9B 0A 7E C5 E8 5E DD 9B D8 4E DC 9B 08 45 -- 0A4AA0
9B 0A 7E C5 0A 76 C4 F0 5E DD 9B E0 4E DC 9B 04 -- 0A4AB0
9B 0A 7E C5 F8 5E DD 9B 14 64 D8 26 9B 10 45 D9 -- 0A4AC0
2E 9B E8 46 DC 9B F0 46 DC 9B F8 4E DC 9B 05 D9 -- 0A4AD0
02 EB 00 01 B8 05 73 00 5C ED 94 9A 34 B4 1E DC -- 0A4AE0
3F F9 1F E4 36 75 DD D3 00 CB 5E 5F C9 9B C0 2B -- 0A4AF0
46 8B 00 00 06 C8 57 56 00 00 00 00 00 00 00 00 -- 0A4B00
50 FA 46 8D 16 00 6A 57 56 FC 46 89 0E 6E F7 10 -- 0A4B10
54 75 00 FA 7E 83 FE 46 89 5E 5F 00 5C BF 98 9A -- 0A4B20
76 FF 0A 76 FF 0C 76 FF 0E 75 FF 12 7E C5 57 56 -- 0A4B30
7E 83 5E 5F 00 5C C1 BA 9A 50 FA 46 8D 16 50 FC -- 0A4B40
6A FE 76 FF 0E 75 FF 12 7E C5 57 56 30 75 00 FA -- 0A4B50

FA 7E 83 5E 5F 00 5C C1 FA 9A 50 FA 46 8D 16 FF -- 0A4B60
BF 78 9A 50 FA 46 8D 16 FE 76 FF 57 56 11 75 00 -- 0A4B70
00 06 C8 57 56 CB 5E 5F C9 FA 46 8B 5E 5F 00 5C -- 0A4B80
8D 16 00 6A 57 56 FC 46 89 0E 6E F7 10 46 8B 00 -- 0A4B90
FA 7E 83 FE 46 89 5E 5F 00 5C BF 98 9A 50 FA 46 -- 0A4BA0
76 FF 0C 76 FF 0E 75 FF 12 7E C5 57 56 54 75 00 -- 0A4BB0
5F 00 5C C2 1A 9A 50 FA 46 8D 16 50 FC 76 FF 0A -- 0A4BC0
```

724

```
FF 0E 75 FF 12 7E C5 57 56 30 75 00 FA 7E 83 5E -- 0A4BD0
5E 5F 00 5C C1 FA 9A 50 FA 46 8D 16 FF 6A FE 76 -- 0A4BE0
50 FA 46 8D 16 FE 76 FF 57 56 11 75 00 FA 7E 83 -- 0A4BF0
CB 5E 5F C9 FA 46 8B 5E 5F 00 5C BF 78 9A 01 FE -- 0A4C00
9A 50 FE 46 8D 16 00 6A 57 56 00 00 04 C8 57 56 -- 0A4C10
56 59 75 00 FE 7E 83 FC 46 89 5E 5F 00 5C BF 98 -- 0A4C20
10 76 FF 50 40 40 12 46 8B 0E 75 FF 0A 7E C5 57 -- 0A4C30
00 5C C1 DA 9A 50 FE 46 8D 16 FC 76 FF 0E 76 FF -- 0A4C40
0E 75 FF 0A 7E C5 57 56 30 75 00 FE 7E 83 5E 5F -- 0A4C50
5F 00 5C C1 FA 9A 50 FE 46 8D 16 FF 6A FC 76 FF -- 0A4C60
FE 46 8D 16 FC 76 FF 57 56 11 75 00 FE 7E 83 5E -- 0A4C70
00 CB 5E 5F C9 FE 46 8B 5E 5F 00 5C BF 78 9A 50 -- 0A4C80
B8 06 74 00 60 05 F7 0A 7E C5 00 00 02 C8 57 56 -- 0A4C90
7C C0 0B F0 8B 04 45 8B 0A 7E C5 01 12 E9 FF FF -- 0A4CA0
00 01 05 F7 0A 7E C5 00 FC E9 FF FF 04 45 C7 08 -- 0A4CB0
64 09 FD 9A 57 0C 76 FF 10 74 00 04 05 F7 2B 74 -- 0A4CC0
EB 00 20 0D 81 0A 7E C5 09 74 C0 0B 04 C4 83 00 -- 0A4CD0
0A 7E C5 00 00 02 45 C7 FF FE 25 81 0A 7E C5 BE -- 0A4CE0
00 64 4E 56 9A 00 80 68 1D 75 0A 45 0B 0C 45 8B -- 0A4CF0
CB 74 C2 0B 0C 55 89 0A 45 89 0A 7E C5 02 C4 83 -- 0A4D00
05 F7 6F 75 00 02 7D 83 0A 7E C5 00 00 02 45 C7 -- 0A4D10
04 00 68 14 74 02 00 05 F7 FF 78 E9 03 74 08 00 -- 0A4D20
00 05 C7 37 B6 3E C5 2E 02 C4 83 00 64 37 6D 9A -- 0A4D30
08 55 89 06 45 89 0C 55 8B 0A 45 8B 0A 7E C5 00 -- 0A4D40
8D 16 00 80 68 0A 75 FF 0C 75 FF 0E 75 FF 57 56 -- 0A4D50
02 45 89 0A 7E C5 5E 5F 00 5C BE F2 9A 50 FE 46 -- 0A4D60
0A 7E C5 FF 22 E9 00 20 05 C7 07 74 00 FE 7E 83 -- 0A4D70
0A 7E C5 FF 12 E9 00 40 0D 81 07 75 00 02 7D 83 -- 0A4D80
05 8A 06 47 FF 26 06 7F C5 26 0A 5E C4 02 4D FF -- 0A4D90
00 08 05 F7 0A 7E C5 0C 75 0D FE 83 F0 8B E4 2A -- 0A4DA0
00 04 C8 57 56 CB 5E 5F C9 C6 8B FF 60 E9 03 75 -- 0A4DB0
46 89 37 BC 16 8B 2E 37 BA 06 8B 2E 0A 76 8B 00 -- 0A4DC0
68 05 37 BC 16 8B 2E 37 BA 06 8B 2E FE 56 89 FC -- 0A4DD0
FE 76 FF 0C 74 35 85 FC 7E C5 19 76 FC 46 3B 01 -- 0A4DE0
C9 D5 EB 12 FC 46 83 04 C4 83 00 64 09 FD 9A 57 -- 0A4DF0
57 56 00 24 FE 8E 00 6C 34 0A 00 CB 5E 5F 01 FE -- 0A4E00
C9 04 C4 83 00 64 5A A0 9A 09 6A 00 6A EC 8B 55 -- 0A4E10
64 5A A0 9A 0A 6A 01 6A EC 8B 55 57 56 CB 5E 5F -- 0A4E20
6A 02 6A EC 8B 55 57 56 CB 5E 5F C9 04 C4 83 00 -- 0A4E30
55 57 56 CB 5E 5F C9 04 C4 83 00 64 5A A0 9A 0C -- 0A4E40
5F C9 04 C4 83 00 64 5A A0 9A 0A 6A 03 6A EC 8B -- 0A4E50
00 64 5A A0 9A 06 6A 04 6A EC 8B 55 57 56 CB 5E -- 0A4E60
08 6A 05 6A EC 8B 55 57 56 CB 5E 5F C9 04 C4 83 -- 0A4E70
8B 55 57 56 CB 5E 5F C9 04 C4 83 00 64 5A A0 9A -- 0A4E80
5E 5F C9 04 C4 83 00 64 5A A0 9A 0A 6A 06 6A EC -- 0A4E90
83 00 64 5A A0 9A 0E 6A 07 6A EC 8B 55 57 56 CB -- 0A4EA0
9A 0A 6A 08 6A EC 8B 55 57 56 CB 5E 5F C9 04 C4 -- 0A4EB0
EC 8B 55 57 56 CB 5E 5F C9 04 C4 83 00 64 5A A0 -- 0A4EC0
CB 5E 5F C9 04 C4 83 00 64 5A A0 9A 04 6A 09 6A -- 0A4ED0
C4 83 00 64 5A A0 9A 05 6A 0A 6A EC 8B 55 57 56 -- 0A4EE0
A0 9A 09 6A 0B 6A EC 8B 55 57 56 CB 5E 5F C9 04 -- 0A4EF0

6A EC 8B 55 57 56 CB 5E 5F C9 04 C4 83 00 64 5A -- 0A4F00
56 CB 5E 5F C9 04 C4 83 00 64 5A A0 9A 08 6A 0C -- 0A4F10
04 C4 83 00 64 5A A0 9A 08 6A 0D 6A EC 8B 55 57 -- 0A4F20
5A A0 9A 04 6A 0E 6A EC 8B 55 57 56 CB 5E 5F C9 -- 0A4F30
0F 6A EC 8B 55 57 56 CB 5E 5F C9 04 C4 83 00 64 -- 0A4F40
57 56 CB 5E 5F C9 04 C4 83 00 64 5A A0 9A 04 6A -- 0A4F50
C9 04 C4 83 00 64 5A A0 9A 06 6A 10 6A EC 8B 55 -- 0A4F60
2B F0 5E DD EE D9 00 00 18 C8 57 56 00 CB 5E 5F -- 0A4F70
```

```
8A 0A 5E C5 FC 46 89 FA 46 89 F8 46 89 C0 2B FF -- 0A4F80
46 FF 05 75 09 FE 83 05 74 20 FE 83 F0 8B 98 07 -- 0A4F90
FC 46 C7 10 75 2D FE 83 0A 74 2B FE 83 E9 EB 0A -- 0A4FA0
30 FE 83 F0 8B 98 07 8A 0A 5E C5 0A 46 FF 00 01 -- 0A4FB0
DD F0 4E DC 3A 74 06 DD 2E 28 7F 39 FE 83 2D 7C -- 0A4FC0
02 C4 83 00 5C ED A7 9A 50 00 30 2D C6 8B F0 5E -- 0A4FD0
83 C3 EB 4F C6 74 00 F8 7E 83 F0 5E DD F0 46 DC -- 0A4FE0
EB 00 01 F8 46 C7 07 75 00 F8 7E 83 0D 75 2E FE -- 0A4FF0
0A 46 FF 66 75 45 FE 83 05 74 65 FE 83 B1 01 FE -- 0A5000
0A 46 FF 08 75 2B FE 83 F0 8B 98 07 8A 0A 5E C5 -- 0A5010
FF 00 01 FA 46 C7 10 75 2D FE 83 10 EB 0A 5E 8B -- 0A5020
83 00 00 FE 46 C7 F0 8B 98 07 8A 0A 5E C5 0A 46 -- 0A5030
FE 46 89 0A FE 46 6B 1C 7F 39 FE 83 21 7C 30 FE -- 0A5040
07 8A 0A 5E C5 0A 46 FF FE 46 01 00 30 2D C6 8B -- 0A5050
03 EB FE 7E 2B 05 74 00 FA 7E 83 DA EB F0 8B 98 -- 0A5060
DD 2E 33 74 C0 0B 4F C7 8B 14 7E FF 0B FE 7E 03 -- 0A5070
2E 22 7D FF 0B EC EB F0 5E DD F0 4E DC 3A 74 06 -- 0A5080
DD 2E 0A 7D C0 0B 47 C7 8B E8 5E DD 3A 7C 06 DD -- 0A5090
5E DD F0 7E DC E8 46 DD EC EB E8 4E DC 3A 74 06 -- 0A50A0
46 DD 03 EB E0 D9 F0 46 DD 07 74 00 FC 7E 83 F0 -- 0A50B0
00 00 40 24 00 00 00 00 00 00 CB 5E 5F C9 9B F0 -- 0A50C0
3B D0 3E C5 2E EC 8B 55 57 56 3F F0 00 00 00 00 -- 0A50D0
8B 00 64 22 FA 9A 00 44 53 B5 9A 05 75 00 3D 83 -- 0A50E0
D4 36 FF 2E 3B D6 36 FF 2E 2D 74 0A 46 0B 0C 46 -- 0A50F0
0E 76 FF 10 76 FF 12 76 FF 00 6A 00 6A 00 6A 3B -- 0A5100
5C A6 44 9A 0A 76 FF 0C 76 FF 03 6A 0A 6A 02 6A -- 0A5110
00 6A 0A 75 00 3D 83 3B D0 3E C5 2E 1A C4 83 00 -- 0A5120
8B 55 57 56 CB 5E 5F C9 02 C4 83 00 64 56 DE 9A -- 0A5130
3B D6 36 FF 2E 00 64 22 FA 9A 00 44 53 B5 9A EC -- 0A5140
76 FF 12 76 FF 00 6A 00 6A 00 6A 3B D4 36 FF 2E -- 0A5150
0A 76 FF 0C 76 FF 03 6A 0A 6A 03 6A 0E 76 FF 10 -- 0A5160
83 00 64 56 DE 9A 00 6A 1A C4 83 00 5C A6 44 9A -- 0A5170
D8 3E C5 2E 00 00 02 C8 57 56 CB 5E 5F C9 02 C4 -- 0A5180
00 08 3D 48 05 8B 3B DC 3E C5 2E 00 01 05 C7 3B -- 0A5190
A2 3B 72 3B 6B 3B 59 A7 FF 2E D8 8B E0 D1 52 77 -- 0A51A0
F3 40 9A 3B 9D 3B 8E 3B A2 3B 87 3B 80 3B 79 3B -- 0A51B0
00 34 82 8D 9A 29 EB 00 44 37 0A 9A 30 EB 00 4C -- 0A51C0
14 EB 00 14 AA 47 9A 1B EB 00 14 34 4A 9A 22 EB -- 0A51D0
9A 05 EB 04 C4 83 00 1C C5 B2 9A 50 FE 46 8D 16 -- 0A51E0
3B 34 9A EC 8B 55 57 56 CB 5E 5F C9 00 1C 8A 93 -- 0A51F0
3E C5 2E EC 8B 55 57 56 CB 5E 5F C9 00 64 01 FE -- 0A5200
00 54 41 1A 9A 00 64 3B 34 9A 00 01 05 C7 3B D0 -- 0A5210
00 3C 86 A0 00 3C 86 A2 00 3C AE 58 CB 5E 5F C9 -- 0A5220
0E 6E F7 10 46 8B 00 00 06 C8 57 56 00 3C 86 9A -- 0A5230
5C BF 98 9A 50 FA 46 8D 16 00 6A 57 56 FC 46 89 -- 0A5240
76 FF 0E 75 FF 12 7E C5 57 56 FE 46 89 5E 5F 00 -- 0A5250
4A F6 9A 50 FA 46 8D 16 50 FC 76 FF 0A 76 FF 0C -- 0A5260
6A FE 76 FF 0E 75 FF 12 7E C5 57 56 5E 5F 00 64 -- 0A5270
FF 57 56 5E 5F 00 64 4A CC 9A 50 FA 46 8D 16 FF -- 0A5280
46 8B 5E 5F 00 5C BF 78 9A 50 FA 46 8D 16 FE 76 -- 0A5290

6E F7 10 46 8B 00 00 06 C8 57 56 CB 5E 5F C9 FA -- 0A52A0
BF 98 9A 50 FA 46 8D 16 00 6A 57 56 FC 46 89 0E -- 0A52B0
FF 0E 75 FF 12 7E C5 57 56 FE 46 89 5E 5F 00 5C -- 0A52C0
56 9A 50 FA 46 8D 16 50 FC 76 FF 0A 76 FF 0C 76 -- 0A52D0
FE 76 FF 0E 75 FF 12 7E C5 57 56 5E 5F 00 64 4B -- 0A52E0
57 56 5E 5F 00 64 4A CC 9A 50 FA 46 8D 16 FF 6A -- 0A52F0
8B 5E 5F 00 5C BF 78 9A 50 FA 46 8D 16 FE 76 FF -- 0A5300
00 6A 57 56 00 00 04 C8 57 56 CB 5E 5F C9 FA 46 -- 0A5310
56 FC 46 89 5E 5F 00 5C BF 98 9A 50 FE 46 8D 16 -- 0A5320
```

726

```
50  0E  76  FF  10  76  FF  02  6A  0E  75  FF  0A  7E  C5  57  --  0A5330
7E  C5  57  56  5E  5F  00  64  4B  26  9A  50  FE  46  8D  16  --  0A5340
CC  9A  50  FE  46  8D  16  FF  6A  FC  76  FF  0E  75  FF  0A  --  0A5350
9A  50  FE  46  8D  16  FC  76  FF  57  56  5E  5F  00  64  4A  --  0A5360
57  56  00  CB  5E  5F  C9  FE  46  8B  5E  5F  00  5C  BF  78  --  0A5370
8D  1E  50  00  03  B8  D8  8E  00  6C  B8  1E  06  EC  8B  55  --  0A5380
56  33  22  36  8D  1E  50  00  5C  C0  7A  9A  56  33  30  36  --  0A5390
5C  C0  BA  9A  56  33  30  36  8D  1E  34  FF  33  2A  36  8D  --  0A53A0
33  30  36  8D  1E  50  00  1E  B8  04  89  33  20  36  8D  00  --  0A53B0
50  00  00  B8  04  89  33  1E  36  8D  00  5C  BF  B8  9A  56  --  0A53C0
F8  9A  56  33  30  36  8D  1E  50  00  00  B8  50  00  01  B8  --  0A53D0
00  01  B8  50  00  01  B8  04  89  33  2C  36  8D  00  5C  BF  --  0A53E0
00  5C  BF  F8  9A  56  33  30  36  8D  1E  50  00  00  B8  50  --  0A53F0
CB  5F  5E  5D  E5  8B  07  1F  04  89  33  2E  36  8D  01  FE  --  0A5400
33  2E  36  FF  D8  8E  00  6C  B8  1E  06  EC  8B  55  57  56  --  0A5410
5A  9A  56  33  1C  36  8D  1E  33  18  36  FF  50  00  01  B8  --  0A5420
0C  4E  8B  C0  8E  33  1E  A1  D8  8E  00  6C  B8  00  5C  C1  --  0A5430
C7  83  02  C6  83  05  89  26  02  8B  00  0E  BE  00  06  BF  --  0A5440
8B  00  02  BF  05  89  26  0A  46  8B  00  00  BF  F3  E2  02  --  0A5450
FF  05  89  26  02  8B  02  C7  83  02  C6  83  05  89  26  02  --  0A5460
33  1C  36  8D  1E  33  2C  36  FF  33  1E  36  FF  33  20  36  --  0A5470
36  FF  50  00  01  B8  33  2C  36  FF  00  5C  C0  9A  9A  56  --  0A5480
2E  36  FF  00  5C  C1  5A  9A  56  33  1C  36  8D  1E  33  18  --  0A5490
00  5C  C1  3A  9A  56  33  1C  36  8D  1E  50  00  01  B8  33  --  0A54A0
FF  2B  00  00  10  C8  57  56  CB  5E  5F  5D  E5  8B  07  1F  --  0A54B0
73  00  5C  ED  94  9A  3F  0A  1E  DC  2E  0A  46  DD  F6  2B  --  0A54C0
2E  0A  46  DD  0A  5E  DD  E0  D9  0A  46  DD  00  01  BF  0B  --  0A54D0
E8  D9  00  01  BE  0B  76  00  5C  ED  94  9A  3F  12  1E  DC  --  0A54E0
6A  F8  5E  DD  0A  4E  DC  0A  46  DD  0A  5E  DD  0A  76  DC  --  0A54F0
54  B6  9A  00  5C  ED  99  9A  F8  46  DD  3F  62  68  0E  07  --  0A5500
46  DD  3F  2A  68  0E  07  6A  F0  5E  DD  0E  C4  83  00  64  --  0A5510
76  DC  0E  C4  83  00  64  54  B6  9A  00  5C  ED  99  9A  F8  --  0A5520
3F  1A  06  DD  2E  10  74  F6  0B  F8  5E  DD  0A  4E  DC  F0  --  0A5530
DD  08  74  FF  0B  F8  5E  DD  F8  66  DC  3F  22  36  DC  2E  --  0A5540
00  CB  5E  5F  C9  9B  F8  46  DD  F8  5E  DD  E0  D9  F8  46  --  0A5550
3F  F0  00  00  00  00  00  00  00  00  00  00  00  00  00  00  --  0A5560
40  00  00  00  00  00  00  00  40  09  21  FB  54  44  2D  18  --  0A5570
40  A7  AE  26  31  65  5F  B5  40  92  E6  FC  EE  07  64  37  --  0A5580
40  91  68  84  2B  AC  09  36  40  A5  93  70  8C  DA  0E  F8  --  0A5590
40  26  A4  F2  14  12  7F  7F  40  68  12  88  D1  79  B4  06  --  0A55A0
40  92  E6  FC  EE  07  64  37  3F  B8  FE  18  E3  90  55  64  --  0A55B0
40  AC  A1  17  04  84  10  3D  40  AA  D4  A5  AE  66  9B  0C  --  0A55C0
40  7A  71  25  76  C7  C5  C0  40  9C  76  66  BF  57  E3  F0  --  0A55D0
3F  F0  00  00  00  00  00  00  40  43  F5  7D  3B  26  BD  A5  --  0A55E0
94  9A  40  64  1E  DC  2E  0A  46  DD  00  00  1A  C8  57  56  --  0A55F0
00  21  05  C7  40  6C  3E  C5  2E  0E  77  00  5C  ED  01  FE  --  0A5600
ED  94  9A  40  70  1E  DC  2E  0A  46  DD  00  A2  E9  EE  D9  --  0A5610
5C  ED  99  9A  0A  46  DD  50  EE  46  8D  16  EC  74  00  5C  --  0A5620
78  06  DD  2E  0A  5E  DD  0C  C4  83  00  5C  EE  89  9A  00  --  0A5630

DD  40  70  06  DC  2E  0A  46  DD  0A  5E  DD  0A  4E  DC  40  --  0A5640
F0  5E  DD  E6  76  DC  40  70  26  DC  2E  0A  46  DD  E6  5E  --  0A5650
DD  40  B0  68  0E  04  6A  F8  5E  DD  F0  4E  DC  F0  46  DD  --  0A5660
DD  0E  C4  83  00  64  54  B6  9A  00  5C  ED  99  9A  F8  46  --  0A5670
00  5C  ED  99  9A  F8  46  DD  40  90  68  0E  04  6A  E6  5E  --  0A5680
5E  DD  F0  4E  DC  E6  76  DC  0E  C4  83  00  64  54  B6  9A  --  0A5690
46  DC  40  88  0E  DC  2E  40  80  26  DC  2E  EE  46  DF  F8  --  0A56A0
00  00  00  00  CB  5E  5F  C9  9B  F8  46  DD  F8  5E  DD  F8  --  0A56B0
3F  F0  00  00  00  00  00  00  00  6C  34  08  00  00  00  00  --  0A56C0
3F  E0  00  00  00  00  00  00  3F  F6  A0  9E  66  7F  3B  CC  --  0A56D0
```

```
CO 24 DB B4 96 07 A2 3E 3F D3 44 13 50 9F 79 FF -- 0A56E0
CO 10 BE 0C E0 CF A0 02 40 2A E3 A0 30 79 3C C4 -- 0A56F0
CO 28 03 90 23 A5 D8 37 3F C7 68 7A 6A 68 E1 A8 -- 0A5700
CO 21 D2 7C E3 07 55 33 40 33 7B 20 99 9F DC 23 -- 0A5710
B8 1E 06 EC 8B 55 57 56 3F F0 00 00 00 00 00 00 -- 0A5720
33 3D 36 FF 50 00 01 B8 33 41 36 FF D8 8E 00 6C -- 0A5730
D8 8E 00 6C B8 00 5C C1 5A 9A 56 33 43 36 8D 1E -- 0A5740
02 8B 00 0E BE 00 04 BF 0C 4E 8B CO 8E 33 32 A1 -- 0A5750
46 8B 00 00 BF F3 E2 02 C7 83 02 C6 83 05 89 26 -- 0A5760
34 36 FF 05 89 26 0C 46 8B 00 02 BF 05 89 26 0A -- 0A5770
9A 56 33 43 36 8D 1E 33 3F 36 FF 33 32 36 FF 33 -- 0A5780
33 3D 36 FF 50 00 01 B8 33 3F 36 FF 00 5C CO 9A -- 0A5790
B8 33 41 36 FF 00 5C C1 5A 9A 56 33 43 36 8D 1E -- 0A57A0
07 1F 00 5C C1 3A 9A 56 33 43 36 8D 1E 50 00 01 -- 0A57B0
00 6C B8 1E 06 EC 8B 55 57 56 CB 5E 5F 5D E5 8B -- 0A57C0
5C CO 7A 9A 56 33 43 36 8D 1E 50 00 03 B8 D8 8E -- 0A57D0
8D 1E 34 FF 33 3D 36 8D 56 33 36 36 8D 1E 50 00 -- 0A57E0
B8 04 89 33 34 36 8D 00 5C CO BA 9A 56 33 43 36 -- 0A57F0
00 5C BF B8 9A 56 33 43 36 8D 1E 50 00 40 01 FE -- 0A5800
00 B8 50 00 01 B8 50 00 00 B8 04 89 33 32 36 8D -- 0A5810
3F 36 8D 00 5C BF F8 9A 56 33 43 36 8D 1E 50 00 -- 0A5820
1E 50 00 00 B8 50 00 01 B8 50 00 01 B8 04 89 33 -- 0A5830
04 89 33 41 36 8D 00 5C BF F8 9A 56 33 43 36 8D -- 0A5840
86 C6 00 01 34 C8 57 56 CB 5F 5E 5D E5 8B 07 1F -- 0A5850
CF 86 C6 01 FE CE 86 C6 01 FE CD 86 C6 01 FE CC -- 0A5860
FE D2 86 C6 01 FE D1 86 C6 01 FE D0 86 C6 01 FE -- 0A5870
00 FE D5 86 C6 00 FE D4 86 C6 00 FE D3 86 C6 00 -- 0A5880
C6 00 FE D8 86 C6 00 FE D7 86 C6 00 FE D6 86 C6 -- 0A5890
86 C6 00 FE DB 86 C6 00 FE DA 86 C6 00 FE D9 86 -- 0A58A0
DF 86 C6 00 FE DE 86 C6 00 FE DD 86 C6 00 FE DC -- 0A58B0
FE E2 86 C6 00 FE E1 86 C6 00 FE E0 86 C6 00 FE -- 0A58C0
00 FE E5 86 C6 00 FE E4 86 C6 00 FE E3 86 C6 00 -- 0A58D0
C6 02 FE E8 86 C6 00 FE E7 86 C6 00 FE E6 86 C6 -- 0A58E0
86 C6 02 FE EB 86 C6 02 FE EA 86 C6 02 FE E9 86 -- 0A58F0
EF 86 C6 00 FE EE 86 C6 00 FE ED 86 C6 00 FE EC -- 0A5900
CC 46 8D 16 03 FE F1 86 C6 00 FE F0 86 C6 00 FE -- 0A5910
81 4A 7C 00 D0 7E 83 04 C4 83 00 5C DF 76 9A 50 -- 0A5920
CC 85 8A D0 7E 03 1F 16 FD 8B 43 7F 00 FF D0 7E -- 0A5930
83 00 14 E1 05 9A 50 CC 46 8D 16 1E EB E4 2A FE -- 0A5940
C4 83 00 14 A3 2B 9A 50 CC 46 8D 16 25 EB 04 C4 -- 0A5950
17 A7 FF 2E D8 8B E0 D1 11 77 00 03 3D 16 EB 04 -- 0A5960
57 56 00 CB 5E 5F C9 42 FA 43 1F 42 EB 43 1F 43 -- 0A5970
5E 5F C9 02 C4 83 0F 80 68 DF 9A 0D 6A EC 8B 55 -- 0A5980
02 C4 83 0F 80 68 DF 9A 0C 6A EC 8B 55 57 56 CB -- 0A5990
0F 80 68 DF 9A 0B 6A EC 8B 55 57 56 CB 5E 5F C9 -- 0A59A0
DF 9A 0A 6A EC 8B 55 57 56 CB 5E 5F C9 02 C4 83 -- 0A59B0
6A EC 8B 55 57 56 CB 5E 5F C9 02 C4 83 0F 80 68 -- 0A59C0
55 57 56 CB 5E 5F C9 02 C4 83 0F 80 68 DF 9A 09 -- 0A59D0

CB 5E 5F C9 02 C4 83 0F 80 68 DF 9A 08 6A EC 8B -- 0A59E0
C9 02 C4 83 0F 80 68 DF 9A 07 6A EC 8B 55 57 56 -- 0A59F0
80 68 DF 9A 06 6A EC 8B 55 57 56 CB 5E 5F 01 FE -- 0A5A00
9A 05 6A EC 8B 55 57 56 CB 5E 5F C9 02 C4 83 0F -- 0A5A10
EC 8B 55 57 56 CB 5E 5F C9 02 C4 83 0F 80 68 DF -- 0A5A20
57 56 CB 5E 5F C9 02 C4 83 0F 80 68 DF 9A 04 6A -- 0A5A30
5E 5F C9 02 C4 83 0F 80 68 DF 9A 03 6A EC 8B 55 -- 0A5A40
02 C4 83 0F 80 68 DF 9A 02 6A EC 8B 55 57 56 CB -- 0A5A50
0F 80 68 DF 9A 01 6A EC 8B 55 57 56 CB 5E 5F C9 -- 0A5A60
DF 9A 00 6A EC 8B 55 57 56 CB 5E 5F C9 02 C4 83 -- 0A5A70
6A EC 8B 55 57 56 CB 5E 5F C9 02 C4 83 0F 80 68 -- 0A5A80
```

```
57  56  00  CB  5E  5F  C9  02  C4  83  0F  80  68  DF  9A  0E  --  0A5A90
45  0C  3E  C5  2E  00  01  05  C7  0A  7E  C5  00  00  0A  C8  --  0A5AA0
75  00  3D  83  45  10  3E  C5  2E  1E  74  00  05  3D  05  8B  --  0A5AB0
45  18  3E  C5  2E  0A  75  00  3D  83  45  14  3E  C5  2E  14  --  0A5AC0
C5  07  74  00  3D  83  45  14  3E  C5  2E  24  74  00  3D  83  --  0A5AD0
74  74  00  3D  83  45  18  3E  C5  2E  00  02  05  C7  0A  7E  --  0A5AE0
05  C7  45  10  3E  C5  2E  6B  EB  00  03  05  C7  0A  7E  C5  --  0A5AF0
20  3E  C5  2E  F6  46  89  05  8B  45  1C  3E  C5  2E  00  01  --  0A5B00
45  1C  3E  C5  2E  45  24  36  C4  2E  F8  46  89  05  8B  45  --  0A5B10
C5  2E  45  28  36  C4  2E  FA  46  89  48  04  03  26  05  8B  --  0A5B20
FE  46  8D  16  FC  46  89  48  04  03  26  05  8B  45  20  3E  --  0A5B30
00  64  40  D0  9A  03  ED  68  04  6A  50  F6  46  8D  16  50  --  0A5B40
64  59  DC  9A  FE  76  FF  0B  74  00  FE  7E  83  0C  C4  83  --  0A5B50
00  3C  92  4E  00  3C  86  9A  CB  5E  5F  C9  02  C4  83  00  --  0A5B60
00  3C  AE  DC  00  3C  AE  DA  00  3C  92  50  00  3C  92  4C  --  0A5B70
E5  9A  00  00  02  C8  57  56  00  3C  AE  D8  00  3C  AE  D6  --  0A5B80
41  6E  9A  00  5C  E3  FA  9A  00  64  50  44  9A  00  4C  DD  --  0A5B90
36  FF  2E  08  C2  68  FE  46  89  00  5C  90  26  9A  00  64  --  0A5BA0
2E  06  C4  83  00  64  47  BE  9A  45  F6  36  FF  2E  45  F8  --  0A5BB0
2E  00  54  3F  B4  9A  05  75  00  57  7D  80  45  F6  3E  C5  --  0A5BC0
FF  2E  46  00  36  FF  2E  57  56  00  05  C6  45  FA  3E  C5  --  0A5BD0
9A  66  6A  45  F6  36  FF  2E  45  F8  36  FF  2E  45  FE  36  --  0A5BE0
36  FF  2E  46  00  36  FF  2E  06  6A  5E  5F  00  5C  FE  EC  --  0A5BF0
FF  2E  50  52  04  C4  83  00  5C  90  BE  9A  45  FE  01  FE  --  0A5C00
0A  C4  83  00  5C  ED  6E  9A  46  02  36  FF  2E  46  04  36  --  0A5C10
08  36  FF  2E  45  FE  36  FF  2E  46  00  36  FF  2E  66  6A  --  0A5C20
FF  2E  0A  C4  83  00  5C  ED  6E  9A  46  06  36  FF  2E  46  --  0A5C30
04  C4  83  00  5C  35  ED  9A  46  0A  36  FF  2E  46  0C  36  --  0A5C40
00  3C  86  A2  00  3C  8F  9C  00  3C  87  74  CB  5E  5F  C9  --  0A5C50
16  C8  57  56  00  3C  86  96  00  3C  87  08  00  3C  87  6E  --  0A5C60
8B  0E  7E  C5  00  01  FC  46  C7  00  00  FE  46  C7  00  00  --  0A5C70
05  C7  FF  FF  FA  46  C7  FF  FF  F8  46  C7  F6  46  89  05  --  0A5C80
46  8D  16  50  FC  46  8D  16  00  6A  02  6A  57  56  00  00  --  0A5C90
7E  83  5E  5F  00  5C  BD  44  9A  50  FE  46  8D  16  50  EA  --  0A5CA0
6D  74  00  EA  7E  83  73  75  00  FE  7E  83  79  75  01  FC  --  0A5CB0
2B  EE  46  8B  61  76  05  3B  F0  46  8B  46  E2  3E  C5  2E  --  0A5CC0
FA  56  89  F8  46  89  FA  E2  D2  D1  E0  D1  00  0A  B9  D2  --  0A5CD0
46  01  FA  E2  D2  D1  E0  D1  00  0A  B9  D2  2B  EC  46  8B  --  0A5CE0
46  01  02  55  8B  05  8B  46  E6  3E  C5  2E  FA  56  11  F8  --  0A5CF0
46  3B  05  03  F6  46  8B  46  E2  3E  C5  2E  FA  56  11  F8  --  0A5D00
36  C4  2E  FF  FF  FA  46  C7  FF  FE  F8  46  C7  1A  76  F0  --  0A5D10
F8  46  8B  05  89  0E  7E  C5  04  2B  26  F0  46  8B  46  E2  --  0A5D20
00  CB  5E  5F  C9  02  55  89  05  89  0A  7E  C5  FA  56  8B  --  0A5D30
76  8B  00  00  02  C8  57  56  00  6C  33  EA  00  6C  33  EE  --  0A5D40
0B  04  C4  83  00  64  09  FD  9A  0A  76  FF  0C  76  FF  12  --  0A5D50
00  A5  E9  03  76  00  02  3D  C6  8B  00  AF  E9  03  74  C0  --  0A5D60
56  47  B2  47  7C  47  77  47  1B  A7  FF  2E  D8  8B  E0  D1  --  0A5D70

8D  16  0E  76  FF  10  76  FF  56  0E  75  FF  0A  7E  C5  57  --  0A5D80
09  74  00  FE  7E  83  5E  5F  00  5C  BE  B2  9A  50  FE  46  --  0A5D90
00  02  45  C7  0A  7E  C5  6C  EB  00  20  0D  81  0A  7E  C5  --  0A5DA0
11  74  00  01  05  F7  FF  9F  25  81  FF  FF  04  45  C7  00  --  0A5DB0
80  02  45  C7  08  55  89  06  45  89  0C  55  8B  0A  45  8B  --  0A5DC0
01  05  F7  0A  7E  C5  A5  EB  00  02  BE  43  EB  C0  2B  00  --  0A5DD0
03  BE  10  56  19  0E  46  29  D2  2B  02  45  8B  0B  75  00  --  0A5DE0
10  56  8B  0E  46  8B  00  01  BE  88  79  00  10  7E  83  00  --  0A5DF0
E9  10  56  89  0E  46  89  00  DA  83  D8  F7  DA  F7  01  FE  --  0A5E00
57  56  CB  5E  5F  C9  FF  FF  B8  E5  EB  00  04  BE  FF  6F  --  0A5E10
36  FF  2E  48  80  36  FF  2E  00  6A  57  56  00  00  08  C8  --  0A5E20
BA  9A  50  F8  46  8D  16  35  FF  48  82  3E  C5  2E  48  7E  --  0A5E30
```

729

```
38 B8 05 74 00 F8 7E 83 FE 46 89 5E 5F 00 5C C0 -- 0A5E40
46 89 02 C4 83 00 64 5D 04 9A FE 76 FF 27 EB 10 -- 0A5E50
76 FF 50 52 0A 76 FF 0C 76 FF 57 56 FC 56 89 FA -- 0A5E60
57 56 CB 5E 5F C9 C0 2B 5E 5F 00 5C FE EC 9A 0E -- 0A5E70
36 FF 2E 48 80 36 FF 2E 00 6A 57 56 00 00 08 C8 -- 0A5E80
BA 9A 50 F8 46 8D 16 35 FF 48 82 3E C5 2E 48 7E -- 0A5E90
38 B8 05 74 00 F8 7E 83 FE 46 89 5E 5F 00 5C C0 -- 0A5EA0
46 89 02 C4 83 00 64 5D 04 9A FE 76 FF 27 EB 10 -- 0A5EB0
76 FF 0A 76 FF 0C 76 FF 50 52 57 56 FC 56 89 FA -- 0A5EC0
33 E2 CB 5E 5F C9 C0 2B 5E 5F 00 5C FE EC 9A 0E -- 0A5ED0
2E 0A 46 DD 00 00 10 C8 57 56 00 6C 33 E8 00 6C -- 0A5EE0
DC 2E 0A 46 DD 0F 72 00 5C ED 94 9A 49 22 1E DC -- 0A5EF0
C7 49 32 3E C5 2E 0D 76 00 5C ED 94 9A 49 2A 1E -- 0A5F00
9A 49 2A 1E DC 2E 0A 46 DD 65 EB EE D9 00 21 05 -- 0A5F10
49 3E 36 DC 2E 49 36 06 DD 2E 0C 75 00 5C ED 94 -- 0A5F20
75 00 5C ED 94 9A 49 22 1E DC 2E 0A 46 DD 4A EB -- 0A5F30
5E DD 0A 4E DC 0A 46 DD E3 EB 49 46 06 DD 2E 07 -- 0A5F40
FE 9A 00 5C ED 99 9A F0 66 DC 49 2A 06 DD 2E F0 -- 0A5F50
9A F8 76 DC 0A 46 DD F8 5E DD 08 C4 83 00 64 4E -- 0A5F60
5E 5F C9 9B 08 C4 83 00 64 3E 62 9A 00 5C ED 99 -- 0A5F70
00 00 00 00 00 00 BF F0 00 00 00 00 00 00 00 CB -- 0A5F80
00 00 40 09 21 FB 54 44 2D 18 00 6C 34 08 3F F0 -- 0A5F90
57 56 C0 09 21 FB 54 44 2D 18 40 00 00 00 00 00 -- 0A5FA0
DD 9B 4A 06 36 DC 2E 9B 0C 46 DF 9B 00 00 08 C8 -- 0A5FB0
56 CB 5E 5F C9 9B F8 46 DC 9B 0A 46 DF 9B F8 5E -- 0A5FC0
F9 9A 00 5C ED 99 9A 0A 46 DD 9B 00 00 04 C8 57 -- 0A5FD0
0A 46 DD 9B 08 45 89 12 7E C5 08 C4 83 00 5C ED -- 0A5FE0
0E DC 2E 9B FC 46 D9 9B FC 5E D9 9B 08 65 DE 9B -- 0A5FF0
C4 83 00 5C ED F9 9A 00 5C ED 99 9A 4A 06 01 FE -- 0A6000
04 C8 57 56 CB 5E 5F C9 9B 32 45 89 12 7E C5 08 -- 0A6010
00 5C ED F9 9A 00 5C ED 99 9A 0A 46 DD 9B 00 00 -- 0A6020
65 DE 9B 0A 46 DD 9B 06 45 89 12 7E C5 08 C4 83 -- 0A6030
9A 4A 06 0E DC 2E 9B FC 46 D9 9B FC 5E D9 9B 06 -- 0A6040
89 12 7E C5 08 C4 83 00 5C ED F9 9A 00 5C ED 99 -- 0A6050
40 8F 40 00 00 00 00 00 00 CB 5E 5F C9 9B 08 45 -- 0A6060
C5 2E 00 00 05 C7 4A B8 3E C5 2E EC 8B 55 57 56 -- 0A6070
8B 4A BC 3E C5 2E 0C 74 00 01 3D 05 8B 4A BC 3E -- 0A6080
4A B8 36 FF 2E 4A BA 36 FF 2E 49 75 00 03 3D 05 -- 0A6090
02 6A 35 FF 4A C0 3E C5 2E 35 FF 4A C4 3E C5 2E -- 0A60A0
4A B8 3E C5 2E 0C C4 83 00 64 3D BA 9A 01 2D 68 -- 0A60B0
64 59 DC 9A 35 FF 4A B8 3E C5 2E 11 74 00 3D 83 -- 0A60C0
C9 00 00 05 C7 4A C8 3E C5 2E 09 EB 02 C4 83 00 -- 0A60D0
00 05 C7 4A B8 3E C5 2E EC 8B 55 57 56 CB 5E 5F -- 0A60E0
99 4A 9A 07 75 00 01 3D 05 8B 4A BC 3E C5 2E 00 -- 0A60F0
05 75 00 03 3D 05 8B 4A BC 3E C5 2E 11 EB 00 44 -- 0A6100
86 9A 00 3C FF FC 00 CB 5E 5F C9 00 2C 69 21 9A -- 0A6110

8B 55 00 6C 16 60 00 3C FF FA 00 3C F5 A4 00 3C -- 0A6120
76 FF 0E 76 FF 50 00 00 B8 50 00 94 B8 1E 06 EC -- 0A6130
1F 0F 68 68 DF 9A 06 76 FF 08 76 FF 0A 76 FF 0C -- 0A6140
00 94 B8 1E 06 EC 8B 55 00 00 0A CA 5D E5 8B 07 -- 0A6150
76 FF 0E 76 FF 10 76 FF 12 76 FF 50 00 00 B8 50 -- 0A6160
1F 0F 50 68 DF 9A 06 76 FF 08 76 FF 0A 76 FF 0C -- 0A6170
00 94 B8 1E 06 EC 8B 55 00 00 0E CA 5D E5 8B 07 -- 0A6180
76 FF 0E 76 FF 10 76 FF 12 76 FF 50 00 00 B8 50 -- 0A6190
1F 0F 60 68 DF 9A 06 76 FF 08 76 FF 0A 76 FF 0C -- 0A61A0
00 94 B8 1E 06 EC 8B 55 00 00 0E CA 5D E5 8B 07 -- 0A61B0
76 FF 0E 76 FF 10 76 FF 12 76 FF 50 00 00 B8 50 -- 0A61C0
1F 0F 58 68 DF 9A 06 76 FF 08 76 FF 0A 76 FF 0C -- 0A61D0
0A 7E C5 EC 8B 55 57 56 00 00 0E CA 5D E5 8B 07 -- 0A61E0
```

730

```
9B 00 01 8B 85 C6 00 01 25 85 C6 00 00 BF 85 C6 -- 0A61F0
06 DD 2E 9B 01 9A 9D D9 9B 4C 32 06 DD 2E 01 FE -- 0A6200
06 DD 2E 9B 00 01 F9 85 C6 01 9E 9D D9 9B 4C 32 -- 0A6210
9D D9 9B 4C 32 06 DD 2E 9B 02 08 9D D9 9B 4C 32 -- 0A6220
85 C7 00 00 02 12 85 C7 00 00 02 10 85 C7 02 0C -- 0A6230
85 C6 00 02 17 85 C6 00 02 16 85 C6 00 00 02 14 -- 0A6240
1B 85 C6 00 02 1A 85 C6 00 02 19 85 C6 00 02 18 -- 0A6250
9B 02 1E 9D D9 9B EE D9 9B 00 02 1C 85 C6 54 02 -- 0A6260
02 26 85 C6 53 02 1D 85 C6 02 22 9D D9 9B EE D9 -- 0A6270
01 02 29 85 C6 01 02 28 85 C6 01 02 27 85 C6 01 -- 0A6280
57 56 3F F0 00 00 00 00 00 00 00 CB 5E 5F C9 9B -- 0A6290
8B 0A 46 8B F8 46 89 05 8B 14 7E C5 00 00 16 C8 -- 0A62A0
46 89 02 45 8B 18 7E C5 FC 56 89 FA 46 89 0C 56 -- 0A62B0
89 04 45 8B F2 46 89 06 45 8B F4 46 89 05 8B F6 -- 0A62C0
0A 7E 8B 10 46 8E 0C 5E 8E 00 00 FE 46 C7 F0 46 -- 0A62D0
0E 5E 03 1C 8B F2 8B 12 4E 8B 0A 56 8B F8 7E 03 -- 0A62E0
F6 76 8B 90 09 EB FF 05 C6 06 72 E4 D0 1C 66 8A -- 0A62F0
90 09 EB FF 05 C6 06 72 E4 D0 47 05 88 00 8A 26 -- 0A6300
FF 05 C6 06 72 E4 D0 47 05 88 00 8A 26 F4 76 8B -- 0A6310
06 72 E4 D0 47 05 88 00 8A 26 F2 76 8B 90 09 EB -- 0A6320
83 47 05 88 00 8A 26 F0 76 8B 90 09 EB FF 05 C6 -- 0A6330
5F C9 05 89 14 7E C5 0A 46 2B C7 8B A5 E2 02 C2 -- 0A6340
84 36 FF 2E 4D 86 36 FF 2E EC 8B 55 57 56 CB 5E -- 0A6350
C4 83 00 64 08 0B 9A 4D 8C 68 0E 4D 91 68 0E 4D -- 0A6360
05 4D 84 06 8B 2E 4D 86 36 FF 2E 44 74 C2 0B 0C -- 0A6370
00 64 08 0B 9A 4D 93 68 0E 4D 98 68 0E 50 00 12 -- 0A6380
84 06 8B 2E 4D 86 36 FF 2E 22 74 C2 0B 0C C4 83 -- 0A6390
08 0B 9A 4D 9A 68 0E 4D 9F 68 0E 50 00 24 05 4D -- 0A63A0
00 64 56 DE 9A 01 6A 0A 75 C2 0B 0C C4 83 00 64 -- 0A63B0
36 FF 2E 4D 88 36 FF 2E 4D 8A 36 FF 2E 02 C4 83 -- 0A63C0
00 64 57 D4 9A 50 00 24 05 4D 84 06 8B 2E 4D 86 -- 0A63D0
00 6C 2C 56 00 24 FE 8E 00 CB 5E 5F C9 08 C4 83 -- 0A63E0
63 3A 00 77 00 3A 6F 63 3A 00 72 00 3A 69 63 3A -- 0A63F0
7E C5 00 00 16 C8 57 56 00 00 77 00 3A 6F 01 FE -- 0A6400
89 FA 46 89 0C 56 8B 0A 46 8B F8 46 89 05 8B 14 -- 0A6410
F4 46 89 05 8B F6 46 89 02 45 8B 18 7E C5 FC 56 -- 0A6420
00 FE 46 C7 F0 46 89 04 45 8B F2 46 89 06 45 8B -- 0A6430
0A 56 8B F8 7E 03 0A 7E 8B 10 46 8E 0C 5E 8E 00 -- 0A6440
C6 06 72 E4 D0 1C 66 8A 0E 5E 03 D9 8B 00 00 B9 -- 0A6450
E4 D0 47 05 88 00 8A 26 F6 76 8B 90 09 EB FF 05 -- 0A6460
05 88 00 8A 26 F4 76 8B 90 09 EB FF 05 C6 06 72 -- 0A6470
8A 26 F2 76 8B 90 09 EB FF 05 C6 06 72 E4 D0 47 -- 0A6480
76 8B 90 09 EB FF 05 C6 06 72 E4 D0 47 05 88 00 -- 0A6490
2B C7 8B A6 75 12 4E 3B 41 47 05 88 00 8A 26 F0 -- 0A64A0
08 C8 57 56 00 CB 5E 5F C9 05 89 14 7E C5 0A 46 -- 0A64B0

FA 46 C7 00 00 F8 46 C7 0C 75 00 0A 7E 83 00 00 -- 0A64C0
D2 9A 50 FC 46 8D 16 0A 76 FF 57 56 29 EB 00 00 -- 0A64D0
9A 50 DA 75 00 FC 7E 83 FE 46 89 5E 5F 00 5C BD -- 0A64E0
F8 46 8B FA 56 89 F8 46 89 02 C4 83 00 64 5D 04 -- 0A64F0
0C 46 8B 00 00 06 C8 57 56 CB 5E 5F C9 FA 56 8B -- 0A6500
89 02 C4 83 00 64 4E 56 9A 50 FE 46 89 0A 6E F7 -- 0A6510
52 57 56 12 74 FA 46 0B FC 46 8B FC 56 89 FA 46 -- 0A6520
8B 5E 5F 00 8C 00 02 9A FE 76 FF 00 6A FA 76 FF -- 0A6530
56 00 00 02 C8 57 56 CB 5E 5F C9 FC 56 8B FA 46 -- 0A6540
5E 5F 00 5C BD F2 9A 50 FE 46 8D 16 0C 76 FF 57 -- 0A6550
1E DC 2E 0A 46 DD 00 00 0A C8 57 56 CB 5E 5F C9 -- 0A6560
05 C7 4F 8E 3E C5 2E 0D 73 00 5C ED 94 9A 4F 86 -- 0A6570
94 9A 4F 86 1E DC 2E 0A 46 DD 60 EB EE D9 00 21 -- 0A6580
0A 46 DD 50 F6 46 8D 16 00 06 BE ED 74 00 5C ED -- 0A6590
```

731

```
F8  5E  DD  OC  C4  83  00  5C  EE  89  9A  00  5C  ED  99  9A  --  0A65A0
9A  4F  92  06  DD  2E  50  4F  9A  3E  F7  2E  99  F6  46  8B  --  0A65B0
DD  F8  5E  DD  OA  C4  83  00  5C  EE  7A  9A  00  5C  ED  99  --  0A65C0
F8  5E  DD  4F  9C  36  DC  2E  F8  46  DC  F8  76  DC  OA  46  --  0A65D0
00  00  00  00  00  CB  5E  5F  C9  9B  F8  46  DD  EC  75  4E  --  0A65E0
3F  FO  00  00  00  00  00  00  00  6C  34  08  00  00  00  00  --  0A65F0
8B  55  57  56  40  00  00  00  00  00  00  00  00  02  01  FE  --  0A6600
8B  04  C4  83  00  64  5C  0E  9A  0E  76  FF  10  76  FF  EC  --  0A6610
8B  0E  46  01  C6  8B  00  FF  BE  03  7E  00  FF  FE  81  FO  --  0A6620
0E  4E  FF  14  74  CO  0B  4F  C7  8B  FE  8B  OA  46  01  C6  --  0A6630
EB  07  88  OA  4E  FF  OA  5E  C5  E4  2A  07  8A  0E  5E  C5  --  0A6640
5F  C9  OC  56  8B  OA  46  8B  07  88  OA  5E  C5  C6  8B  E5  --  0A6650
46  89  OC  56  8B  OA  46  8B  00  00  04  C8  57  56  CB  5E  --  0A6660
FO  8B  E4  2A  05  8A  0E  46  FF  0E  7E  C5  FE  56  89  FC  --  0A6670
2A  05  8A  0E  46  FF  0E  7E  C5  14  74  CO  0B  4E  C6  8B  --  0A6680
05  C6  OA  7E  C5  E5  EB  05  88  OA  46  FF  OA  7E  C5  E4  --  0A6690
8B  55  57  56  00  CB  5E  5F  C9  FE  56  8B  FC  46  8B  00  --  0A66A0
50  C4  3E  C5  2E  50  CA  16  8B  2E  50  C8  06  8B  2E  EC  --  0A66B0
2E  57  56  03  05  C6  50  CC  3E  C5  2E  02  55  89  05  89  --  0A66C0
FF  2E  50  D2  36  FF  2E  50  C4  36  FF  2E  50  C6  36  FF  --  0A66D0
83  50  DO  3E  C5  2E  5E  5F  00  5C  C1  9A  9A  50  DO  36  --  0A66E0
C5  2E  35  FF  02  75  FF  50  DC  3E  C5  2E  34  74  00  3D  --  0A66F0
2A  05  8A  50  D4  3E  C5  2E  50  E4  2A  05  8A  50  D8  3E  --  0A6700
C4  83  00  64  28  52  9A  35  FF  50  DO  3E  C5  2E  50  E4  --  0A6710
00  6C  33  92  CB  5E  5F  C9  05  8B  50  DO  3E  C5  2E  OA  --  0A6720
00  6C  33  8A  00  6C  33  88  00  6C  33  96  00  64  5C  E6  --  0A6730
57  56  00  00  02  C8  57  56  00  6C  33  8E  00  6C  33  8C  --  0A6740
9A  50  FE  46  8D  16  51  64  36  FF  2E  51  66  36  FF  2E  --  0A6750
2E  E4  2A  05  8A  51  6C  3E  C5  2E  5E  5F  00  5C  C1  7A  --  0A6760
57  56  00  05  C6  51  6C  3E  C5  2E  05  88  51  68  3E  C5  --  0A6770
9A  50  FE  46  8D  16  51  64  36  FF  2E  51  66  36  FF  2E  --  0A6780
00  00  02  C8  57  56  CB  5E  5F  C9  5E  5F  00  5C  C1  9A  --  0A6790
05  88  51  6C  3E  C5  2E  E4  2A  05  8A  51  68  3E  C5  2E  --  0A67A0
FE  46  8D  16  51  64  36  FF  2E  51  66  36  FF  2E  57  56  --  0A67B0
00  6C  33  DC  CB  5E  5F  C9  5E  5F  00  5C  C1  9A  9A  50  --  0A67C0
7E  C5  00  00  14  C8  57  56  00  6C  33  E0  00  6C  33  DA  --  0A67D0
89  FA  46  89  OC  56  8B  OA  46  8B  F8  46  89  05  8B  14  --  0A67E0
F4  46  89  05  8B  F6  46  89  02  45  8B  18  7E  C5  FC  56  --  0A67F0
46  C7  FO  46  89  04  45  8B  F2  46  89  06  45  8B  01  FE  --  0A6800
8B  F8  7E  03  OA  7E  8B  10  46  8E  OC  5E  8E  00  00  FE  --  0A6810
26  F6  76  8B  0E  5E  03  1C  8B  F2  8B  12  4E  8B  OA  56  --  0A6820
76  8B  47  05  88  00  8A  26  F4  76  8B  47  05  88  00  8A  --  0A6830
47  05  88  00  8A  26  FO  76  8B  47  05  88  00  8A  26  F2  --  0A6840
C9  05  89  14  7E  C5  OA  46  2B  C7  8B  DO  E2  02  C2  83  --  0A6850

89  05  8B  14  7E  C5  00  00  14  C8  57  56  00  CB  5E  5F  --  0A6860
7E  C5  FC  56  89  FA  46  89  OC  56  8B  OA  46  8B  F8  46  --  0A6870
89  06  45  8B  F4  46  89  05  8B  F6  46  89  02  45  8B  18  --  0A6880
OC  5E  8E  00  00  FE  46  C7  FO  46  89  04  45  8B  F2  46  --  0A6890
8B  00  00  B9  OA  56  8B  F8  7E  03  OA  7E  8B  10  46  8E  --  0A68A0
F4  76  8B  47  05  88  00  8A  26  F6  76  8B  OE  5E  03  D9  --  0A68B0
8B  47  05  88  00  8A  26  F2  76  8B  47  05  88  00  8A  26  --  0A68C0
C7  8B  D1  75  12  4E  3B  41  47  05  88  00  8A  26  FO  76  --  0A68D0
OA  C8  57  56  CB  5E  5F  C9  05  89  14  7E  C5  OA  46  2B  --  0A68E0
50  F6  46  8D  16  35  FF  52  F2  3E  C5  2E  57  56  00  00  --  0A68F0
36  FF  2E  50  57  56  FC  46  89  5E  5F  00  5C  CO  7A  9A  --  0A6900
8D  16  35  FF  52  FA  3E  C5  2E  52  F6  36  FF  2E  52  F8  --  0A6910
F6  7E  83  FE  46  89  5E  5F  00  5C  CO  BA  9A  50  F6  46  --  0A6920
89  F8  46  89  02  C4  83  00  64  5D  04  9A  50  22  75  00  --  0A6930
EC  9A  18  6A  50  52  OA  76  FF  OC  76  FF  57  56  FA  56  --  0A6940
```

```
00  6C  33  76  CB  5E  5F  C9  F6  46  8B  5E  5F  00  5C  FE  --  0A6950
46  DD  00  00  08  C8  57  56  00  6C  33  74  00  6C  33  68  --  0A6960
0A  46  DD  0F  72  00  5C  ED  94  9A  53  54  1E  DC  2E  0A  --  0A6970
64  3E  C5  2E  0D  76  00  5C  ED  94  9A  53  5C  1E  DC  2E  --  0A6980
5C  ED  99  9A  0A  46  DD  20  EB  EE  D9  00  21  05  C7  53  --  0A6990
68  06  DD  2E  F8  5E  DD  08  C4  83  00  64  48  86  9A  00  --  0A69A0
00  00  CB  5E  5F  C9  9B  F8  66  DC  53  70  36  DC  2E  53  --  0A69B0
34  08  3F  F0  00  00  00  00  00  00  BF  F0  00  00  00  00  --  0A69C0
00  00  00  00  00  00  40  09  21  FB  54  44  2D  18  00  6C  --  0A69D0
53  D8  1E  DC  2E  0A  46  DD  00  00  08  C8  57  56  40  00  --  0A69E0
DC  12  46  DD  40  EB  12  46  DD  05  75  00  5C  ED  94  9A  --  0A69F0
06  DC  2E  F8  4E  DC  F8  46  DD  F8  5E  DD  0A  76  01  FE  --  0A6A00
DC  08  C4  83  00  64  4E  FE  9A  00  5C  ED  99  9A  53  E0  --  0A6A10
ED  94  9A  53  D8  1E  DC  2E  F8  46  DD  F8  5E  DD  0A  4E  --  0A6A20
C9  9B  F8  46  DD  03  EB  E0  D9  F8  46  DD  07  73  00  5C  --  0A6A30
00  00  00  00  00  00  00  00  00  00  00  00  00  CB  5E  5F  --  0A6A40
6A  50  F6  46  8D  16  00  00  0A  C8  57  56  3F  F0  00  00  --  0A6A50
9B  06  75  4D  F6  7E  80  06  C4  83  00  64  24  00  9A  02  --  0A6A60
9B  54  48  36  DC  2E  9B  0A  46  DD  9B  0A  EB  0A  46  DD  --  0A6A70
6A  50  F6  46  8D  16  00  00  0A  C8  57  56  CB  5E  5F  C9  --  0A6A80
9B  06  75  4D  F6  7E  80  06  C4  83  00  64  24  00  9A  02  --  0A6A90
9B  54  48  0E  DC  2E  9B  0A  46  DD  9B  0A  EB  0A  46  DD  --  0A6AA0
08  C8  57  56  40  39  66  66  66  66  66  66  CB  5E  5F  C9  --  0A6AB0
25  FA  46  C7  00  64  FC  46  C7  FF  9C  FE  46  C7  00  00  --  0A6AC0
FF  00  01  05  C7  54  B2  3E  C5  2E  00  00  F8  46  C7  00  --  0A6AD0
00  14  EC  AE  9A  FE  76  FF  FC  76  FF  FA  76  FF  F8  76  --  0A6AE0
02  C8  57  56  CB  5E  5F  C9  00  4C  D2  4F  9A  08  C4  83  --  0A6AF0
09  74  C0  0B  05  89  54  B2  3E  C5  2E  00  01  B8  00  00  --  0A6B00
34  06  00  CB  5E  5F  C9  00  14  EE  A2  9A  00  00  05  C7  --  0A6B10
07  DD  12  5E  C5  16  76  8B  00  00  10  C8  57  56  00  6C  --  0A6B20
7E  F7  3B  00  01  BF  4E  F0  5E  DD  0A  46  DD  F8  5E  DD  --  0A6B30
DC  F0  46  DD  14  5E  8E  12  5E  03  03  E3  C1  DF  8B  22  --  0A6B40
F0  5E  DD  F0  4E  DC  0A  46  DD  F8  5E  DD  F8  46  DC  0F  --  0A6B50
46  DD  14  5E  8E  12  5E  03  03  E3  C1  DF  8B  DA  EB  47  --  0A6B60
5E  5F  C9  9B  F8  46  DD  F8  5E  DD  F8  46  DC  0F  DC  F0  --  0A6B70
2A  05  8A  0A  46  FF  0A  7E  C5  EC  8B  55  57  56  00  CB  --  0A6B80
70  06  8B  2E  55  72  36  FF  2E  22  74  C0  0B  F0  8B  E4  --  0A6B90
F8  8B  06  C4  83  00  64  31  A4  9A  56  50  00  12  05  55  --  0A6BA0
8B  2E  55  72  36  FF  2E  1F  EB  FF  FF  B8  D3  74  F7  3B  --  0A6BB0
C4  83  00  64  31  A4  9A  0A  6A  50  00  12  05  55  70  06  --  0A6BC0
00  24  FE  8E  CB  5E  5F  C9  C0  2B  DE  75  00  0A  3D  06  --  0A6BD0
46  8B  F8  46  89  05  8B  14  7E  C5  00  00  14  C8  57  56  --  0A6BE0
89  05  8B  18  7E  C5  FC  56  89  FA  46  89  0C  56  8B  0A  --  0A6BF0

8B  10  46  8E  0C  5E  8E  00  00  FE  46  C7  F6  46  01  FE  --  0A6C00
0E  5E  03  D9  8B  00  00  B9  0A  56  8B  F8  7E  03  0A  7E  --  0A6C10
75  12  4E  3B  41  02  C7  83  05  88  00  8A  26  F6  76  8B  --  0A6C20
00  CB  5E  5F  C9  05  89  14  7E  C5  0A  46  2B  C7  8B  EA  --  0A6C30
89  56  2A  3E  C5  2E  D2  2B  0A  46  8B  EC  8B  55  57  56  --  0A6C40
68  19  6A  EC  8B  55  57  56  CB  5E  5F  C9  02  55  89  05  --  0A6C50
5C  EE  DC  9A  35  FF  02  75  FF  56  2A  3E  C5  2E  66  0D  --  0A6C60
56  2A  3E  C5  2E  36  19  D2  81  62  EB  05  08  C4  83  00  --  0A6C70
FF  25  FA  E2  D8  D1  FA  D1  00  11  B9  02  55  89  05  89  --  0A6C80
12  C8  57  56  00  6C  33  FE  00  CB  5E  5F  C9  D2  2B  7F  --  0A6C90
0C  56  8B  0A  46  8B  F8  46  89  05  8B  14  7E  C5  00  00  --  0A6CA0
03  0A  7E  8B  10  46  8E  0C  5E  8E  FC  56  89  FA  46  89  --  0A6CB0
8B  0E  5E  03  1C  8B  F2  2B  12  4E  8B  0A  56  8B  F8  7E  --  0A6CC0
05  88  47  05  88  47  05  88  47  05  88  00  8A  26  18  76  --  0A6CD0
05  89  14  7E  C5  0A  46  2B  C7  8B  E2  E2  02  C2  83  47  --  0A6CE0
89  05  8B  14  7E  C5  00  00  12  C8  57  56  CB  5E  5F  C9  --  0A6CF0
```

733

```
5E  8E  FC  56  89  FA  46  89  OC  56  8B  OA  46  8B  F8  46  --  OA6DOO
OO  OO  B9  OA  56  8B  F8  7E  03  OA  7E  8B  10  46  8E  OC  --  OA6D10
O5  88  47  O5  88  OO  8A  26  18  76  8B  OE  5E  03  D9  8B  --  OA6D20
2B  C7  8B  E3  75  12  4E  3B  41  47  05  88  47  O5  88  47  --  OA6D30
04  C8  57  56  OO  CB  5E  5F  C9  O5  89  14  7E  C5  OA  46  --  OA6D40
89  FC  46  89  57  32  16  8B  2E  57  30  06  8B  2E  OO  OO  --  OA6D50
3B  01  68  O5  57  32  16  8B  2E  57  30  06  8B  2E  FE  56  --  OA6D60
57  FE  76  FF  OC  74  OO  3D  83  FC  7E  C5  1A  76  FC  46  --  OA6D70
57  56  D4  EB  12  FC  46  83  04  C4  83  OO  64  OA  64  9A  --  OA6D80
FE  8E  CB  5E  5F  C9  5E  5F  OO  5C  BD  72  9A  OA  76  FF  --  OA6D90
9A  32  6A  50  CE  46  8D  16  OO  OO  3C  C8  57  56  OO  24  --  OA6DAO
46  8D  16  OA  76  FF  OC  76  FF  06  C4  83  OO  5C  DO  03  --  OA6DBO
C4  46  8D  16  3C  6A  08  C4  83  OO  64  5B  B4  9A  50  C4  --  OA6DCO
80  36  FF  2E  57  82  36  FF  2E  04  6A  OA  6A  03  6A  50  --  OA6DDO
33  FO  OO  CB  5E  5F  C9  10  C4  83  OO  5C  A5  FF  9A  57  --  OA6DEO
56  8B  OA  46  8B  12  76  8B  OO  OO  04  C8  57  56  OO  6C  --  OA6DFO
80  FC  46  FF  FC  7E  C5  FE  56  89  FC  46  89  OC  01  FE  --  OA6EOO
3D  80  OE  7E  C5  19  74  F6  OB  FC  4E  FF  F5  75  OO  3D  --  OA6E10
88  FC  46  FF  FC  7E  C5  98  05  8A  OE  46  FF  11  74  OO  --  OA6E20
OC  56  8B  OA  46  8B  OO  05  C6  FC  7E  C5  E3  EB  4E  05  --  OA6E30
OB  OC  45  8B  OA  7E  C5  EC  8B  55  57  56  CB  5E  5F  C9  --  OA6E40
8B  OE  46  8B  31  74  OE  46  OB  10  46  8B  39  75  OA  45  --  OA6E50
OO  01  05  F7  OO  10  OD  81  OC  55  89  OA  45  89  10  56  --  OA6E60
45  C7  08  55  89  06  45  89  10  56  8B  OE  46  8B  13  74  --  OA6E70
5E  5F  C9  OO  OO  02  45  C7  OA  7E  C5  08  EB  OO  80  02  --  OA6E80
46  89  OE  66  F7  10  46  8B  OO  OO  02  C8  57  56  OO  CB  --  OA6E90
36  42  9A  12  76  FF  14  76  FF  24  74  OO  FE  7E  83  FE  --  OA6EAO
FF  OA  7E  C5  OF  74  FF  FF  3D  FO  8B  04  C4  83  OO  64  --  OA6EBO
66  F7  10  46  8B  D6  EB  FE  4E  FF  05  88  C6  8B  OA  46  --  OA6ECO
57  56  OO  CB  5E  5F  C9  OE  76  F7  D2  2B  FE  46  2B  OE  --  OA6EDO
OA  7E  C5  OE  5E  C4  39  74  F6  OB  12  76  8B  EC  8B  55  --  OA6EEO
OA  46  FF  28  EB  OO  01  B8  10  7E  07  3A  26  98  05  8A  --  OA6EFO
05  8A  OA  7E  C5  OE  5E  C4  1B  EB  E4  75  4E  OE  46  FF  --  OA6FOO
3D  80  OA  7E  C5  OA  EB  FF  FF  B8  05  7D  07  3A  26  98  --  OA6F10
OO  OO  04  C8  57  56  OO  CB  5E  5F  C9  CO  2B  DA  75  OO  --  OA6F20
OB  FE  56  89  FC  46  89  OC  56  8B  OA  46  8B  12  76  8B  --  OA6F30
FC  7E  C5  98  05  8A  OE  46  FF  OE  7E  C5  4E  16  74  F6  --  OA6F40
OB  74  CO  OB  4E  C6  8B  E6  75  CO  OA  05  88  FC  46  FF  --  OA6F50
56  8B  OA  46  8B  EE  EB  OO  05  C6  FC  46  FF  FC  7E  C5  --  OA6F60
F8  46  8D  16  OO  OO  08  C8  57  56  OO  CB  5E  5F  C9  OC  --  OA6F70
C4  83  OO  5C  EE  AE  9A  OO  5C  ED  99  9A  OA  46  DD  50  --  OA6F80
06  DD  2E  OB  74  OO  5C  ED  94  9A  59  40  1E  DC  2E  OC  --  OA6F90

CB  5E  5F  C9  9B  F8  46  DD  F8  5E  DD  F8  46  DC  59  48  --  OA6FAO
3F  FO  OO  OO  OO  OO  OO  OO  OO  OO  OO  OO  OO  OO  OO  OO  --  OA6FBO
64  4E  56  9A  50  02  EO  C1  12  46  8B  EC  8B  55  57  56  --  OA6FCO
04  75  C2  OB  02  55  89  05  89  OA  7E  C5  02  C4  83  OO  --  OA6FDO
OO  64  4E  56  9A  50  02  EO  C1  12  46  8B  1E  EB  CO  2B  --  OA6FEO
B8  E1  74  C2  OB  02  55  89  05  89  OE  7E  C5  02  C4  83  --  OA6FFO
57  56  OO  OO  02  C8  57  56  CB  5E  5F  C9  OO  01  01  FE  --  OA7OOO
89  5E  5F  OO  5C  CO  7A  9A  OE  76  FF  10  76  FF  OO  6A  --  OA7010
FF  OO  64  3D  2A  9A  20  75  OO  3D  83  OE  7E  C5  FE  46  --  OA7020
03  6A  FE  76  FF  OA  76  FF  OC  76  FF  OE  76  FF  10  76  --  OA7030
57  56  CB  5E  5F  C9  OE  C4  83  OO  64  3D  BA  9A  OO  6A  --  OA7040
6A  OO  6A  OO  6A  OO  6A  13  74  OO  OA  7E  83  EC  8B  55  --  OA7050
CB  5E  5F  C9  OA  C4  83  OO  64  28  52  9A  OA  76  FF  03  --  OA7060
6A  OO  6A  OO  6A  13  74  OO  OA  7E  83  EC  8B  55  57  56  --  OA7070
5F  C9  OA  C4  83  OO  64  28  52  9A  OA  76  FF  OO  6A  OO  --  OA7080
OA  7E  C5  OE  46  FF  OE  76  C4  EC  8B  55  57  56  CB  5E  --  OA7090
E7  75  OO  3D  80  OA  46  FF  OC  75  04  3A  26  98  05  8A  --  OA70AO
```

734

```
98  05  8A  0A  7E  C5  0E  76  C4  0E  4E  FF  19  EB  C0  2B  --  0A70B0
5E  5F  C9  00  01  B8  03  EB  FF  FF  B8  05  7D  04  3A  26  --  0A70C0
46  89  0C  56  8B  0A  46  8B  00  00  04  C8  57  56  00  CB  --  0A70D0
FF  F5  75  00  3D  80  FC  46  FF  FC  7E  C5  FE  56  89  FC  --  0A70E0
46  FF  FC  7E  C5  98  05  8A  0E  46  FF  0E  7E  C5  FC  4E  --  0A70F0
5E  5F  C9  0C  56  8B  0A  46  8B  EB  75  C0  0A  05  88  FC  --  0A7100
9A  0C  76  FF  0A  76  FF  1E  06  EC  8B  55  57  56  00  CB  --  0A7110
07  16  16  C6  83  F5  8B  1F  16  04  C4  83  0F  90  68  DF  --  0A7120
00  0E  B9  E3  D1  0A  5E  8B  0A  7E  03  0A  7E  03  FE  8B  --  0A7130
57  56  CB  5E  5F  EB  03  5D  07  1F  E3  03  FC  A5  F3  FD  --  0A7140
5E  DD  5B  10  36  DC  2E  5B  08  06  DD  2E  00  00  08  C8  --  0A7150
64  2E  6A  9A  00  5C  ED  99  9A  F8  66  DC  0A  46  DD  F8  --  0A7160
21  FB  54  44  2D  18  00  CB  5E  5F  C9  9B  08  C4  83  00  --  0A7170
00  00  04  C8  57  56  40  00  00  00  00  00  00  00  40  09  --  0A7180
80  FC  7E  C5  FE  56  89  FC  46  89  0C  56  8B  0A  46  8B  --  0A7190
2D  80  03  7D  7B  3D  80  08  7E  60  3D  80  12  74  00  3D  --  0A71A0
CB  5E  5F  C9  0C  56  8B  0A  46  8B  E6  EB  FC  46  FF  20  --  0A71B0
F0  8B  98  05  8A  0A  46  FF  0A  7E  C5  EC  8B  55  57  56  --  0A71C0
00  64  31  A4  9A  56  0E  76  FF  10  76  FF  1A  74  C0  0B  --  0A71D0
C0  2B  02  EB  FF  FF  B8  DC  74  F7  3B  F8  8B  06  C4  83  --  0A71E0
80  0A  7E  C5  0E  76  8B  EC  8B  55  57  56  CB  5E  5F  C9  --  0A71F0
3B  F8  8B  E4  2A  07  8A  0A  5E  8B  1A  74  00  3D  01  FE  --  0A7200
DE  EB  0A  46  FF  09  EB  0C  56  8B  0A  46  8B  08  75  F7  --  0A7210
46  8B  00  00  04  C8  57  56  CB  5E  5F  C9  D0  8B  C0  2B  --  0A7220
0E  46  FF  0E  7E  C5  FE  56  89  FC  46  89  0C  56  8B  0A  --  0A7230
8B  EB  75  C0  0A  05  88  FC  46  FF  FC  7E  C5  98  05  8A  --  0A7240
DD  EC  8B  55  57  56  00  CB  5E  5F  C9  0C  56  8B  0A  46  --  0A7250
34  FE  B6  9A  00  5C  ED  99  9A  5C  06  0E  DC  2E  0A  46  --  0A7260
15  47  65  2B  82  FE  00  CB  5E  5F  C9  9B  08  C4  83  00  --  0A7270
46  89  0C  56  8B  0A  46  8B  00  00  04  C8  57  56  3F  F7  --  0A7280
8B  F5  75  00  3D  80  0A  46  FF  0A  7E  C5  FE  56  89  FC  --  0A7290
DD  EC  8B  55  57  56  CB  5E  5F  C9  48  FC  46  2B  0A  46  --  0A72A0
2E  08  C4  83  00  64  3F  9A  9A  00  5C  ED  99  9A  0A  46  --  0A72B0
6B  B1  BB  B5  55  15  00  CB  5E  5F  C9  9B  5C  56  0E  DC  --  0A72C0
88  E4  2A  04  45  8A  0A  7E  C5  EC  8B  55  57  56  40  02  --  0A72D0
88  E4  2A  08  45  8A  02  45  88  E4  2A  06  45  8A  01  45  --  0A72E0
7D  83  0C  7E  C5  EC  8B  55  57  56  CB  5E  5F  C9  03  45  --  0A72F0
0A  46  8B  09  EB  FF  FF  B8  00  20  0D  81  09  7C  00  04  --  0A7300
00  00  02  C8  57  56  CB  5E  5F  C9  04  45  89  0C  7E  C5  --  0A7310
3A  9A  50  FE  46  8D  16  00  6A  00  6A  0A  76  FF  57  56  --  0A7320
00  00  02  C8  57  56  00  CB  5E  5F  C9  5E  5F  00  5C  C2  --  0A7330

8B  06  C4  83  00  64  24  00  9A  05  6A  50  FE  46  8D  16  --  0A7340
00  6A  EC  8B  55  1E  00  CB  5E  5F  C9  00  02  25  FE  46  --  0A7350
83  CC  00  64  28  52  9A  0E  76  FF  04  6A  00  6A  00  6A  --  0A7360
46  8B  00  00  04  C8  57  56  00  00  08  CA  1F  5D  0A  C4  --  0A7370
C9  FE  56  8B  FC  46  8B  00  00  FC  46  C7  FE  46  89  0A  --  0A7380
C9  00  00  FE  46  C7  00  00  02  C8  57  56  00  CB  5E  5F  --  0A7390
00  00  00  00  00  00  00  00  00  00  00  00  00  CB  5E  5F  --  0A73A0
00  00  00  00  00  00  00  00  00  00  00  00  00  00  00  00  --  0A73B0
00  00  00  00  00  00  00  00  00  00  00  00  00  00  00  00  --  0A73C0
00  00  00  00  00  00  00  00  00  00  00  00  00  00  00  00  --  0A73D0
00  00  00  00  00  00  00  00  00  00  00  00  00  00  00  00  --  0A73E0
00  00  00  00  00  00  00  00  00  00  00  00  00  00  00  00  --  0A73F0
00  00  00  00  00  00  00  00  00  00  00  00  00  00  01  FE  --  0A7400
00  00  00  00  00  00  00  00  00  00  00  00  00  00  00  00  --  0A7410
00  00  00  00  00  00  00  00  00  00  00  00  00  00  00  00  --  0A7420
00  00  00  00  00  00  00  00  00  00  00  00  00  00  00  00  --  0A7430
00  00  00  00  00  00  00  00  00  00  00  00  00  00  00  00  --  0A7440
00  00  00  00  00  00  00  00  00  00  00  00  00  00  00  00  --  0A7450
```

735

```
00 00 00 00 00 00 00 00 00 00 00 00 00 00 00 00 -- 0A7460
00 00 00 00 00 00 00 00 00 00 00 00 00 00 00 00 -- 0A7470
00 00 00 00 00 00 00 00 00 00 00 00 00 00 00 00 -- 0A7480
00 00 00 00 00 00 00 00 00 00 00 00 C0 00 00 00 -- 0A7490
00 00 00 00 00 00 00 00 00 00 00 00 00 00 00 00 -- 0A74A0
00 00 00 00 00 00 00 00 00 00 00 00 00 00 00 00 -- 0A74B0
00 00 00 00 00 00 00 00 00 00 00 00 00 00 00 00 -- 0A74C0
00 00 00 00 00 00 00 00 00 00 00 00 00 00 00 00 -- 0A74D0
00 00 00 00 00 00 00 00 00 00 00 00 00 00 00 00 -- 0A74E0
00 00 00 00 00 00 00 00 00 00 00 00 00 00 00 00 -- 0A74F0
00 00 00 00 00 00 00 00 00 00 00 00 00 00 00 00 -- 0A7500
00 00 00 00 00 00 00 00 00 00 00 00 00 00 00 00 -- 0A7510
00 00 00 00 00 00 00 00 00 00 00 00 00 00 00 00 -- 0A7520
00 00 00 00 00 00 00 00 00 00 00 00 00 00 00 00 -- 0A7530
00 00 00 00 00 00 00 00 00 00 00 00 00 00 00 00 -- 0A7540
00 00 00 00 00 00 00 00 00 00 00 00 00 00 00 00 -- 0A7550
00 00 00 00 00 00 00 00 00 00 00 00 00 00 00 00 -- 0A7560
00 00 00 00 00 00 00 00 00 00 00 00 00 00 00 00 -- 0A7570
00 00 00 00 00 00 00 00 00 00 00 00 00 00 00 00 -- 0A7580
00 00 00 00 00 00 00 00 00 00 00 00 00 00 00 00 -- 0A7590
00 00 00 00 00 00 00 00 00 00 00 00 00 00 00 00 -- 0A75A0
00 00 00 00 00 00 00 00 00 00 00 00 00 00 00 00 -- 0A75B0
00 00 00 00 00 00 00 00 00 00 00 00 00 00 00 00 -- 0A75C0
00 00 00 00 00 00 00 00 00 00 00 00 00 00 00 00 -- 0A75D0
00 00 00 00 00 00 00 00 00 00 00 00 00 00 00 00 -- 0A75E0
00 00 00 00 00 00 00 00 00 00 00 00 00 00 00 00 -- 0A75F0
00 00 00 00 00 00 00 00 00 00 00 00 00 00 01 FE -- 0A7600
00 00 00 00 00 00 00 00 00 00 00 00 00 00 00 00 -- 0A7610
00 00 00 00 00 00 00 00 00 00 00 00 00 00 00 00 -- 0A7620
00 00 00 00 00 00 00 00 00 00 00 00 00 00 00 00 -- 0A7630
00 00 00 00 00 00 00 00 00 00 00 00 00 00 00 00 -- 0A7640
00 00 00 00 00 00 00 00 00 00 00 00 00 00 00 00 -- 0A7650
00 00 00 00 00 00 00 00 00 00 00 00 00 00 00 00 -- 0A7660
2D 2D 2D 2D 2D 2D 20 0A 00 00 00 00 00 00 00 00 -- 0A7670
6F 72 46 20 79 70 6F 43 2D 2D 2D 2D 2D 2D 2D 2D -- 0A7680
65 6C 69 66 20 6F 54 20 64 25 20 62 6D 46 20 6D -- 0A7690
61 72 61 70 20 73 6E 72 61 74 5F 74 63 00 0A 20 -- 0A76A0
72 5F 74 73 72 69 66 5F 73 20 3A 73 72 74 65 6D -- 0A76B0
20 20 20 20 20 20 20 00 0A 64 25 20 2D 20 77 6F -- 0A76C0
72 5F 73 20 20 20 20 20 20 20 20 20 20 20 20 20 -- 0A76D0

20 20 20 20 20 20 00 0A 64 25 20 2D 20 73 77 6F -- 0A76E0
5F 73 20 20 20 20 20 20 20 20 20 20 20 20 20 20 -- 0A76F0
25 20 2D 20 6E 6D 75 6C 6F 63 5F 74 73 72 69 66 -- 0A7700
20 20 20 20 20 20 20 20 20 20 20 20 20 00 0A 64 -- 0A7710
73 6E 6D 75 6C 6F 63 5F 73 20 20 20 20 20 20 20 -- 0A7720
2D 2D 2D 2D 2D 2D 2D 20 0A 00 0A 64 25 20 2D 20 -- 0A7730
6D 6F 72 46 20 79 70 6F 43 2D 2D 2D 2D 2D 2D 2D -- 0A7740
20 64 25 20 62 6D 46 20 6F 54 20 65 6C 69 46 20 -- 0A7750
61 72 61 70 20 73 6E 72 61 74 5F 74 63 00 0A 20 -- 0A7760
72 5F 74 73 72 69 66 5F 73 20 3A 73 72 74 65 6D -- 0A7770
20 20 20 20 20 20 20 00 0A 64 25 20 2D 20 77 6F -- 0A7780
72 5F 73 20 20 20 20 20 20 20 20 20 20 20 20 20 -- 0A7790
20 20 20 20 20 20 00 0A 64 25 20 2D 20 73 77 6F -- 0A77A0
5F 73 20 20 20 20 20 20 20 20 20 20 20 20 20 20 -- 0A77B0
25 20 2D 20 6E 6D 75 6C 6F 63 5F 74 73 72 69 66 -- 0A77C0
20 20 20 20 20 20 20 20 20 20 20 20 20 00 0A 64 -- 0A77D0
73 6E 6D 75 6C 6F 63 5F 73 20 20 20 20 20 20 20 -- 0A77E0
00 00 00 00 00 FF 00 FF 00 00 0A 64 25 20 2D 20 -- 0A77F0
00 00 00 00 FF FF FF FF 00 00 FF FF FF FF 01 FE -- 0A7800
```

```
00  00  00  00  00  00  00  00  00  00  00  00  00  00  00  00  --  0A7810
00  00  00  00  00  00  00  00  00  00  00  00  00  00  00  00  --  0A7820
00  00  00  00  00  00  00  00  00  00  00  00  00  00  00  00  --  0A7830
00  00  00  00  00  00  00  00  00  00  00  00  00  00  00  00  --  0A7840
00  00  00  00  00  00  00  00  00  00  00  00  00  00  00  00  --  0A7850
00  00  00  00  00  00  00  00  00  00  00  00  00  00  00  00  --  0A7860
00  00  00  00  00  00  00  00  00  00  00  00  00  00  00  00  --  0A7870
00  00  00  00  00  00  00  00  00  00  00  00  00  00  00  00  --  0A7880
00  00  00  00  00  00  00  00  00  00  00  00  00  00  00  00  --  0A7890
00  00  00  00  00  00  00  00  00  00  00  00  00  00  00  00  --  0A78A0
00  00  00  00  00  00  00  00  00  00  00  00  00  00  00  00  --  0A78B0
00  00  00  00  00  00  00  00  00  00  00  00  00  00  00  00  --  0A78C0
00  00  00  00  00  00  00  00  00  00  00  00  00  00  00  00  --  0A78D0
00  00  00  00  00  00  00  00  00  00  00  00  00  00  00  00  --  0A78E0
00  00  00  00  00  00  00  00  00  00  00  00  00  00  00  00  --  0A78F0
00  00  00  00  00  00  00  00  00  00  00  00  00  00  00  00  --  0A7900
00  00  00  00  00  00  00  00  00  00  00  00  00  00  00  00  --  0A7910
00  00  00  00  00  00  00  00  00  00  00  00  00  00  00  00  --  0A7920
00  00  00  00  00  00  00  00  00  00  00  00  00  00  00  00  --  0A7930
00  00  00  00  00  00  00  00  00  00  00  00  00  00  00  00  --  0A7940
00  00  00  00  00  00  00  00  00  00  00  00  00  00  00  00  --  0A7950
00  00  00  00  00  00  00  00  00  00  00  00  00  00  00  00  --  0A7960
00  00  00  00  00  00  00  00  00  00  00  00  00  00  00  00  --  0A7970
00  00  00  00  00  00  00  00  00  00  00  00  00  00  00  00  --  0A7980
00  00  00  00  00  00  00  00  00  00  00  00  00  00  00  00  --  0A7990
00  00  00  00  00  00  00  00  00  00  00  00  00  00  00  00  --  0A79A0
00  00  00  00  00  00  00  00  00  00  00  00  00  00  00  00  --  0A79B0
00  00  00  00  00  00  00  00  00  00  00  00  00  00  00  00  --  0A79C0
00  00  00  00  00  00  00  00  00  00  00  00  00  00  00  00  --  0A79D0
00  00  00  00  00  00  00  00  00  00  00  00  00  00  00  00  --  0A79E0
00  00  00  00  00  00  00  00  00  00  00  00  00  00  00  00  --  0A79F0
00  00  00  00  00  00  00  00  00  00  00  00  00  00  01  FE  --  0A7A00
00  00  00  00  00  00  00  00  00  00  00  00  00  00  00  00  --  0A7A10
00  00  00  00  00  00  00  00  00  00  00  00  00  00  00  00  --  0A7A20
00  00  00  00  00  00  00  00  00  00  00  00  00  00  00  00  --  0A7A30
00  00  00  00  00  00  00  00  00  00  00  00  00  00  00  00  --  0A7A40
49  4C  50  50  41  20  00  00  00  00  00  00  00  00  00  00  --  0A7A50
0A  64  25  20  52  4F  52  52  45  20  4E  4F  49  54  41  43  --  0A7A60
63  61  74  73  20  66  6F  20  4D  4F  54  54  4F  42  20  00  --  0A7A70

70  6F  70  20  74  61  20  64  65  68  63  61  65  72  20  6B  --  0A7A80
70  20  72  6F  20  68  73  75  70  20  4F  4E  20  00  20  69  --  0A7A90
61  20  64  65  77  6F  6C  6C  61  20  65  72  61  20  70  6F  --  0A7AA0
20  73  61  68  20  6E  72  75  74  65  72  20  72  65  74  66  --  0A7AB0
6F  62  20  00  20  64  65  6C  6C  61  63  20  6E  65  65  62  --  0A7AC0
65  72  20  6B  63  61  74  73  20  66  6F  20  6D  6F  74  74  --  0A7AD0
20  00  20  66  70  6F  70  20  74  61  20  64  65  68  63  61  --  0A7AE0
61  20  70  6F  70  20  72  6F  20  68  73  75  70  20  4F  4E  --  0A7AF0
72  65  74  66  61  20  64  65  77  6F  6C  6C  61  20  65  72  --  0A7B00
6E  65  65  62  20  73  61  68  20  6E  72  75  74  65  72  20  --  0A7B10
6D  6F  74  74  6F  62  20  00  20  64  65  6C  6C  61  63  20  --  0A7B20
65  68  63  61  65  72  20  6B  63  61  74  73  20  66  6F  20  --  0A7B30
70  20  4F  4E  20  00  20  63  70  6F  70  20  74  61  20  64  --  0A7B40
61  20  65  72  61  20  70  6F  70  20  72  6F  20  68  73  75  --  0A7B50
74  65  72  20  72  65  74  66  61  20  64  65  77  6F  6C  6C  --  0A7B60
6C  61  63  20  6E  65  65  62  20  73  61  68  20  6E  72  75  --  0A7B70
61  74  73  20  66  6F  20  50  4F  54  20  00  20  64  65  6C  --  0A7B80
75  70  20  74  61  20  64  65  68  63  61  65  72  20  6B  63  --  0A7B90
72  6F  20  68  73  75  70  20  4F  4E  20  00  20  69  68  73  --  0A7BA0
64  65  77  6F  6C  6C  61  20  65  72  61  20  70  6F  70  20  --  0A7BB0
```

```
61 68 20 6E 72 75 74 65 72 20 72 65 74 66 61 20 -- 0A7BC0
20 00 20 64 65 6C 6C 61 63 20 6E 65 65 62 20 73 -- 0A7BD0
61 65 72 20 6B 63 61 74 73 20 66 6F 20 50 4F 54 -- 0A7BE0
20 00 20 66 68 73 75 70 20 74 61 20 64 65 68 63 -- 0A7BF0
70 6F 70 20 72 6F 20 68 73 75 70 20 4F 4E 01 FE -- 0A7C00
74 66 61 20 64 65 77 6F 6C 6C 61 20 65 72 61 20 -- 0A7C10
65 62 20 73 61 68 20 6E 72 75 74 65 72 20 72 65 -- 0A7C20
20 50 4F 54 20 00 20 64 65 6C 6C 61 63 20 6E 65 -- 0A7C30
64 65 68 63 61 65 72 20 6B 63 61 74 73 20 66 6F -- 0A7C40
70 20 4F 4E 20 00 20 63 68 73 75 70 20 74 61 20 -- 0A7C50
61 20 65 72 61 20 70 6F 70 20 72 6F 20 68 73 75 -- 0A7C60
74 65 72 20 72 65 74 66 61 20 64 65 77 6F 6C 6C -- 0A7C70
6C 61 63 20 6E 65 65 62 20 73 61 68 20 6E 72 75 -- 0A7C80
72 6F 20 68 73 75 70 20 4F 4E 20 00 20 64 65 6C -- 0A7C90
64 65 77 6F 6C 6C 61 20 65 72 61 20 70 6F 70 20 -- 0A7CA0
61 68 20 6E 72 75 74 65 72 20 72 65 74 66 61 20 -- 0A7CB0
20 00 20 64 65 6C 6C 61 63 20 6E 65 65 62 20 73 -- 0A7CC0
61 65 72 20 6B 63 61 74 73 20 66 6F 20 50 4F 54 -- 0A7CD0
20 00 20 73 68 73 75 70 20 74 61 20 64 65 68 63 -- 0A7CE0
61 20 70 6F 70 20 72 6F 20 68 73 75 70 20 4F 4E -- 0A7CF0
72 65 74 66 61 20 64 65 77 6F 6C 6C 61 20 65 72 -- 0A7D00
6E 65 65 62 20 73 61 68 20 6E 72 75 74 65 72 20 -- 0A7D10
6D 6F 74 74 6F 62 20 00 20 64 65 6C 6C 61 63 20 -- 0A7D20
65 68 63 61 65 72 20 6B 63 61 74 73 20 66 6F 20 -- 0A7D30
6D 76 69 72 70 07 00 73 70 6F 70 20 74 61 20 64 -- 0A7D40
65 5F 65 76 6C 6F 73 6D 37 5B 1B 20 20 20 78 62 -- 0A7D50
20 6D 30 5B 1B 74 65 73 5F 6E 6F 69 74 61 75 71 -- 0A7D60
6C 6F 73 6D 37 5B 1B 20 20 20 00 0A 47 45 42 20 -- 0A7D70
1B 74 65 73 5F 6E 6F 69 74 61 75 71 65 5F 65 76 -- 0A7D80
0A 29 64 31 25 28 20 20 47 45 42 20 20 6D 30 5B -- 0A7D90
20 20 00 0A 64 31 25 43 39 32 5B 1B 41 5B 1B 00 -- 0A7DA0
74 61 75 71 65 5F 65 76 6C 6F 73 6D 37 5B 1B 20 -- 0A7DB0
52 20 45 20 20 6D 30 5B 1B 74 65 73 5F 6E 6F 69 -- 0A7DC0
31 20 3E 20 4E 20 20 20 20 3A 52 20 4F 20 52 20 -- 0A7DD0
20 20 20 20 00 0A 2E 74 69 78 45 20 20 20 2E 36 -- 0A7DE0
2E 36 25 20 20 20 20 20 20 66 31 2E 36 25 7C -- 0A7DF0
66 31 2E 36 25 20 20 20 20 20 20 66 31 01 FE -- 0A7E00
78 20 7C 20 20 20 20 20 20 20 20 20 20 7C 20 -- 0A7E10

20 7C 20 20 20 20 20 3D 20 20 20 20 20 7C 20 31 -- 0A7E20
36 25 7C 20 20 20 20 00 0A 7C 20 66 31 2E 36 25 -- 0A7E30
20 66 31 2E 36 25 20 20 20 20 20 20 66 31 2E -- 0A7E40
20 20 20 7C 20 66 31 2E 36 25 20 20 20 20 20 20 -- 0A7E50
20 20 7C 20 32 78 20 7C 20 20 20 20 20 2A 20 20 -- 0A7E60
66 31 2E 36 25 20 7C 20 20 20 20 20 3D 20 20 20 -- 0A7E70
20 20 66 31 2E 36 25 7C 20 20 20 20 00 0A 7C 20 -- 0A7E80
20 20 20 20 20 20 66 31 2E 36 25 20 20 20 20 20 -- 0A7E90
20 20 20 20 20 20 20 20 7C 20 66 31 2E 36 25 20 -- 0A7EA0
20 3D 20 20 20 20 20 7C 20 33 78 20 7C 20 20 20 -- 0A7EB0
20 00 0A 7C 20 66 31 2E 36 25 20 7C 20 20 20 20 -- 0A7EC0
61 75 71 65 5F 65 76 6C 6F 73 6D 37 5B 1B 20 20 -- 0A7ED0
20 45 20 20 6D 30 5B 1B 74 65 73 5F 6E 6F 69 74 -- 0A7EE0
20 53 42 41 20 20 20 20 3A 52 20 4F 20 52 20 52 -- 0A7EF0
20 20 3C 20 20 29 45 55 4C 41 56 5F 58 41 4D 28 -- 0A7F00
2E 74 69 78 45 20 20 20 20 2E 31 30 30 30 2E 30 -- 0A7F10
49 54 55 4C 4F 53 20 20 20 20 20 20 20 00 0A -- 0A7F20
31 78 6D 34 5B 1B 20 20 20 20 20 20 3A 4E 4F -- 0A7F30
20 20 20 20 20 6D 30 5B 1B 66 32 2E 36 25 3D 20 -- 0A7F40
32 2E 36 25 3D 20 32 78 6D 34 5B 1B 20 20 20 20 -- 0A7F50
5B 1B 20 20 20 20 20 20 20 20 20 6D 30 5B 1B 66 -- 0A7F60
```

738

```
0A 6D 30 5B 1B 66 32 2E 36 25 3D 20 33 78 6D 34 -- 0A7F70
71 65 5F 65 76 6C 6F 73 6D 37 5B 1B 20 20 20 00 -- 0A7F80
20 20 6D 30 5B 1B 74 65 73 5F 6E 6F 69 74 61 75 -- 0A7F90
2D 2D 2D 2D 2D 2D 2D 2D 2D 2D 2D 2D 2D 2D 2D 2D -- 0A7FA0
2D 2D 2D 2D 2D 2D 2D 2D 2D 2D 2D 2D 2D 2D 2D 2D -- 0A7FB0
2D 2D 2D 2D 2D 2D 2D 2D 2D 2D 2D 2D 2D 2D 2D 2D -- 0A7FC0
5B 1B 41 5B 1B 00 0A 44 4E 45 20 20 2D 2D 2D 2D -- 0A7FD0
70 55 6D 37 5B 1B 00 00 00 0A 44 4E 45 43 37 37 -- 0A7FE0
69 74 61 64 61 72 47 6C 61 63 6F 4C 65 74 61 64 -- 0A7FF0
20 20 20 47 45 42 20 20 6D 30 5B 1B 6E 6F 01 FE -- 0A8000
1B 41 5B 1B 00 0A 68 63 74 61 72 63 73 74 65 67 -- 0A8010
6D 37 5B 1B 00 0A 63 6F 6C 6C 61 63 43 32 34 5B -- 0A8020
61 64 61 72 47 6C 61 63 6F 4C 65 74 61 64 70 55 -- 0A8030
20 72 6F 72 72 45 20 20 6D 30 5B 1B 6E 6F 69 74 -- 0A8040
61 63 20 20 6E 69 20 20 20 29 58 28 78 25 20 3D -- 0A8050
31 28 20 6E 72 75 74 65 52 20 20 2E 63 6F 6C 6C -- 0A8060
00 0A 44 4E 45 43 37 37 5B 1B 41 5B 1B 0A 2E 29 -- 0A8070
63 65 78 45 74 69 6E 49 43 30 35 5B 1B 41 5B 1B -- 0A8080
61 6F 6C 43 33 36 5B 1B 41 5B 1B 00 0A 65 74 75 -- 0A8090
00 0A 29 65 74 75 63 65 78 65 28 20 62 6F 6A 64 -- 0A80A0
61 64 70 55 6D 37 5B 1B 00 65 74 75 63 65 78 65 -- 0A80B0
6E 6F 69 74 61 64 61 72 47 6C 61 63 6F 4C 65 74 -- 0A80C0
78 25 20 3D 20 72 6F 72 72 45 20 20 6D 30 5B 1B -- 0A80D0
6F 6A 64 61 6F 6C 20 20 6E 69 20 20 20 29 58 28 -- 0A80E0
65 52 20 20 2E 29 65 74 75 63 65 78 65 28 20 62 -- 0A80F0
37 5B 1B 41 5B 1B 0A 2E 29 32 28 20 6E 72 75 74 -- 0A8100
74 61 64 70 55 6D 37 5B 1B 00 0A 44 4E 45 43 37 -- 0A8110
1B 6E 6F 69 74 61 64 61 72 47 6C 61 63 6F 4C 65 -- 0A8120
65 6C 69 46 65 63 61 6C 70 65 52 20 20 6D 30 5B -- 0A8130
61 63 6F 4C 65 74 61 64 70 55 6D 37 5B 1B 00 0A -- 0A8140
20 20 6D 30 5B 1B 6E 6F 69 74 61 64 61 72 47 6C -- 0A8150
20 20 20 29 58 28 78 25 20 3D 20 72 6F 72 72 45 -- 0A8160
2E 65 6C 69 46 65 63 61 6C 70 65 52 20 20 6E 69 -- 0A8170
5B 1B 0A 2E 29 33 28 20 6E 72 75 74 65 52 20 20 -- 0A8180
5B 1B 41 5B 1B 00 0A 44 4E 45 43 37 37 5B 1B 41 -- 0A8190
20 20 3A 65 6C 69 46 65 74 65 6C 65 44 43 30 34 -- 0A81A0
1B 00 0A 6D 30 5B 1B 73 35 31 2D 25 6D 34 5B 1B -- 0A81B0

72 47 6C 61 63 6F 4C 65 74 61 64 70 55 6D 37 5B -- 0A81C0
72 72 45 20 20 6D 30 5B 1B 6E 6F 69 74 61 64 61 -- 0A81D0
20 6E 69 20 20 20 29 58 28 78 25 20 3D 20 72 6F -- 0A81E0
65 52 20 20 2E 65 6C 69 46 65 74 65 6C 65 44 20 -- 0A81F0
1B 41 5B 1B 0A 2E 29 34 28 20 6E 72 75 74 01 FE -- 0A8200
37 37 5B 1B 41 5B 1B 00 0A 44 4E 45 43 37 37 5B -- 0A8210
00 00 00 00 00 00 4B 43 42 2E 00 0A 44 4E 45 43 -- 0A8220
00 04 00 00 00 00 00 00 00 00 00 00 00 00 00 00 -- 0A8230
00 00 00 00 44 00 00 00 00 00 00 00 00 00 00 00 -- 0A8240
43 C0 00 00 44 00 00 00 43 C0 00 00 00 00 00 00 -- 0A8250
00 00 00 00 00 00 00 00 00 00 00 00 00 FF FF -- 0A8260
00 00 00 00 00 00 00 00 00 00 00 00 00 00 00 -- 0A8270
00 00 00 00 00 00 00 00 00 00 00 00 00 00 00 00 -- 0A8280
00 00 00 00 00 00 00 00 00 00 00 00 00 00 00 00 -- 0A8290
00 00 00 00 00 00 00 00 00 00 00 00 00 00 00 00 -- 0A82A0
00 00 00 00 00 00 00 00 00 00 00 00 00 00 00 00 -- 0A82B0
00 00 00 00 00 00 00 00 00 00 00 00 00 00 00 00 -- 0A82C0
00 00 00 00 00 00 00 00 00 00 00 00 00 00 00 00 -- 0A82D0
00 00 00 00 00 00 00 00 00 00 00 00 00 00 00 00 -- 0A82E0
00 00 00 00 00 00 00 00 00 00 00 00 00 00 00 00 -- 0A82F0
00 00 00 00 00 00 00 00 00 00 00 00 00 00 00 00 -- 0A8300
00 00 00 00 00 00 00 00 00 00 00 00 00 00 00 00 -- 0A8310
```

```
00 00 00 00 00 00 00 00 00 00 00 00 00 00 00 00 -- 0A8320
00 00 00 00 00 00 00 00 00 00 00 00 00 00 00 00 -- 0A8330
00 00 00 00 00 00 00 00 00 00 00 00 00 00 00 00 -- 0A8340
00 00 00 00 00 00 00 00 00 00 00 00 00 00 00 00 -- 0A8350
00 00 00 00 00 00 00 00 00 00 00 00 00 00 00 00 -- 0A8360
00 00 00 00 00 00 00 00 00 00 00 00 00 00 00 00 -- 0A8370
00 00 00 00 00 00 00 00 00 00 00 00 00 00 00 00 -- 0A8380
00 00 00 00 00 00 00 00 00 00 00 00 00 00 00 00 -- 0A8390
00 00 00 00 00 00 00 00 00 00 00 00 00 00 00 00 -- 0A83A0
00 00 00 00 00 00 00 00 00 00 00 00 00 00 00 00 -- 0A83B0
00 00 00 00 00 00 00 00 00 00 00 00 00 00 00 00 -- 0A83C0
00 00 00 00 00 00 00 00 00 00 00 00 00 00 00 00 -- 0A83D0
00 00 00 00 00 00 00 00 00 00 00 00 00 00 00 00 -- 0A83E0
00 00 00 00 00 00 00 00 00 00 00 00 00 00 00 00 -- 0A83F0
00 00 00 00 00 00 00 00 00 00 00 00 00 00 01 FE -- 0A8400
00 00 00 00 00 00 00 00 00 00 00 00 00 00 00 00 -- 0A8410
00 00 00 00 00 00 00 00 00 00 00 00 00 00 00 00 -- 0A8420
00 00 00 00 00 00 00 00 00 00 00 00 00 00 00 00 -- 0A8430
00 00 00 00 00 00 00 00 00 00 00 00 00 00 00 00 -- 0A8440
00 00 00 00 00 00 00 00 00 00 00 00 00 00 00 00 -- 0A8450
00 00 00 00 00 00 00 00 00 00 00 00 00 00 00 00 -- 0A8460
00 00 00 00 00 00 00 00 00 00 00 00 00 00 00 00 -- 0A8470
63 25 1B 00 63 25 63 25 1B 63 25 63 25 1B 00 00 -- 0A8480
2A 2A 2A 2A 2A 2A 2A 2A 00 63 25 63 25 1B 63 25 -- 0A8490
4F 46 4E 49 20 4E 49 20 52 4F 52 52 45 20 2A 2A -- 0A84A0
53 41 52 45 5F 57 20 3A 52 45 47 41 4E 41 4D 20 -- 0A84B0
00 0A 5D 78 34 25 5B 20 57 4F 44 4E 49 57 5F 45 -- 0A84C0
52 4F 52 52 45 20 2A 2A 2A 2A 2A 2A 2A 2A 2A 2A -- 0A84D0
52 45 47 41 4E 41 4D 20 4F 46 4E 49 20 4E 49 20 -- 0A84E0
44 4E 49 57 5F 59 41 4C 50 53 49 44 5F 57 20 3A -- 0A84F0
2A 2A 2A 2A 2A 2A 00 0A 5D 78 34 25 5B 20 57 4F -- 0A8500
4E 49 20 4E 49 20 52 4F 52 52 45 20 2A 2A 2A 2A -- 0A8510
45 44 5F 57 20 3A 52 45 47 41 4E 41 4D 20 4F 46 -- 0A8520
45 50 59 54 5F 57 4F 44 4E 49 57 5F 45 54 45 4C -- 0A8530
2A 2A 2A 2A 2A 2A 2A 2A 00 0A 5D 78 34 25 5B 20 -- 0A8540
4F 46 4E 49 20 4E 49 20 52 4F 52 52 45 20 2A 2A -- 0A8550

41 45 52 43 5F 57 20 3A 52 45 47 41 4E 41 4D 20 -- 0A8560
20 45 50 59 54 5F 57 4F 44 4E 49 57 5F 5F 45 54 -- 0A8570
2A 2A 2A 2A 2A 2A 2A 2A 2A 00 0A 5D 78 34 25 5B -- 0A8580
20 4F 46 4E 49 20 4E 49 20 52 4F 52 52 45 20 2A -- 0A8590
54 5F 54 45 53 5F 57 20 3A 52 45 47 41 4E 41 4D -- 0A85A0
2A 00 0A 5D 78 34 25 5B 20 4E 45 4C 5F 54 58 45 -- 0A85B0
20 52 4F 52 52 45 20 2A 2A 2A 2A 2A 2A 2A 2A 2A -- 0A85C0
3A 52 45 47 41 4E 41 4D 20 4F 46 4E 49 20 4E 49 -- 0A85D0
4F 44 4E 49 57 5F 5F 45 54 41 45 52 43 5F 57 20 -- 0A85E0
2A 2A 2A 2A 2A 2A 2A 00 0A 5D 78 34 25 5B 20 57 -- 0A85F0
49 20 4E 49 20 52 4F 52 52 45 20 2A 2A 2A 01 FE -- 0A8600
49 5F 57 20 3A 52 45 47 41 4E 41 4D 20 4F 46 4E -- 0A8610
55 4E 45 4D 5F 49 54 4C 55 4D 5F 54 52 45 53 4E -- 0A8620
2A 2A 2A 2A 2A 2A 2A 2A 00 0A 5D 78 34 25 5B 20 -- 0A8630
4F 46 4E 49 20 4E 49 20 52 4F 52 52 45 20 2A 2A -- 0A8640
49 44 4F 4D 5F 57 20 3A 52 45 47 41 4E 41 4D 20 -- 0A8650
25 5B 20 55 4E 45 4D 5F 49 54 4C 55 4D 5F 59 46 -- 0A8660
00 00 00 00 00 00 00 01 FF FF 00 00 0A 5D 78 34 -- 0A8670
00 00 00 00 00 00 00 00 00 00 00 00 00 00 00 00 -- 0A8680
00 00 00 00 00 00 00 00 00 00 00 00 00 00 00 00 -- 0A8690
00 00 00 00 00 00 00 00 00 00 00 00 00 00 00 00 -- 0A86A0
00 00 00 00 00 00 00 00 00 00 00 00 00 00 00 00 -- 0A86B0
20 20 20 20 20 20 20 20 20 20 20 20 20 20 00 00 -- 0A86C0
```

```
20 20 20 20 20 20 20 20 00 20 20 20 20 20 20 20 -- 0A86D0
57 4C 00 20 20 20 20 20 20 20 20 20 20 20 20 20 -- 0A86E0
25 20 3A 4B 53 41 4D 20 57 45 4E 00 73 25 20 3A -- 0A86F0
25 20 3A 57 4C 00 73 25 20 3A 54 59 4C 46 00 73 -- 0A8700
6D 00 73 25 20 3A 4B 53 41 4D 20 57 45 4E 00 73 -- 0A8710
69 57 20 74 68 67 69 65 48 20 20 20 20 20 20 6D -- 0A8720
69 65 48 20 20 20 20 68 63 6E 49 00 20 68 74 64 -- 0A8730
20 20 20 20 20 00 20 68 74 64 69 57 20 74 68 67 -- 0A8740
20 20 20 20 20 20 20 20 20 20 20 20 20 20 20 20 -- 0A8750
25 20 66 32 2E 36 25 20 3A 20 20 65 7A 69 53 00 -- 0A8760
20 20 20 20 20 20 20 20 20 20 20 00 66 32 2E 36 -- 0A8770
20 20 73 65 52 00 20 20 20 20 20 20 20 20 20 20 -- 0A8780
00 00 66 32 2E 36 25 20 66 32 2E 36 25 20 3A 20 -- 0A8790
00 00 00 00 00 00 00 00 00 00 00 00 00 00 00 00 -- 0A87A0
00 00 00 00 00 00 00 00 00 00 00 00 00 00 00 00 -- 0A87B0
00 00 00 00 00 00 00 00 00 00 00 00 00 00 00 00 -- 0A87C0
00 00 00 00 00 00 00 00 00 00 00 00 00 00 00 00 -- 0A87D0
00 00 00 00 00 00 00 00 00 00 00 00 00 00 00 00 -- 0A87E0
00 00 00 00 00 00 00 00 00 00 00 00 00 00 00 00 -- 0A87F0
00 00 00 00 00 00 00 00 00 00 00 00 00 00 01 FE -- 0A8800
00 00 00 00 00 00 00 00 00 00 00 00 00 00 00 00 -- 0A8810
00 00 00 00 00 00 00 00 00 00 00 00 00 00 00 00 -- 0A8820
00 00 00 00 00 00 00 00 00 00 00 00 00 00 00 00 -- 0A8830
00 00 00 00 00 00 00 00 00 00 00 00 00 00 00 00 -- 0A8840
00 00 00 00 00 00 00 00 00 00 00 00 00 00 00 00 -- 0A8850
00 00 00 00 00 00 00 00 00 00 00 00 00 00 00 00 -- 0A8860
00 00 00 00 00 00 00 00 00 00 00 00 00 00 00 00 -- 0A8870
00 00 00 00 00 00 00 00 00 00 00 00 00 00 00 00 -- 0A8880
00 00 00 00 00 00 00 00 00 00 00 00 00 00 00 00 -- 0A8890
00 00 00 00 00 00 00 00 00 00 00 00 00 00 00 00 -- 0A88A0
00 00 00 00 00 00 00 00 00 00 00 00 00 00 00 00 -- 0A88B0
00 00 00 00 00 00 00 00 00 00 00 00 00 00 00 00 -- 0A88C0
00 00 00 00 00 00 00 00 00 00 00 00 00 00 00 00 -- 0A88D0
00 00 00 00 00 00 00 00 00 00 00 00 00 00 00 00 -- 0A88E0
00 00 00 00 00 00 00 00 00 00 00 00 00 00 00 00 -- 0A88F0

00 00 00 00 00 00 00 00 00 00 00 00 00 00 00 00 -- 0A8900
00 00 00 00 00 00 00 00 00 00 00 00 00 00 00 00 -- 0A8910
00 00 00 00 00 00 00 00 00 00 00 00 00 00 00 00 -- 0A8920
00 00 00 00 00 00 00 00 00 00 00 00 00 00 00 00 -- 0A8930
00 00 00 00 00 00 00 00 00 00 00 00 00 00 00 00 -- 0A8940
00 00 00 00 00 00 00 00 00 00 00 00 00 00 00 00 -- 0A8950
00 00 00 00 00 00 00 00 00 00 00 00 00 00 00 00 -- 0A8960
00 00 00 00 00 00 00 00 00 00 00 00 00 00 00 00 -- 0A8970
00 00 00 00 00 00 00 00 00 00 00 00 00 00 00 00 -- 0A8980
00 00 00 00 00 00 00 00 00 00 00 00 00 00 00 00 -- 0A8990
00 00 00 00 00 00 00 00 00 00 00 00 00 00 00 00 -- 0A89A0
00 00 00 00 00 00 00 00 00 00 00 00 00 00 00 00 -- 0A89B0
00 00 00 00 00 00 00 00 00 00 00 00 00 00 00 00 -- 0A89C0
00 00 00 00 00 00 00 00 00 00 00 00 00 00 00 00 -- 0A89D0
00 00 00 00 00 00 00 00 00 00 00 00 00 00 00 00 -- 0A89E0
00 00 00 00 00 00 00 00 00 00 00 00 00 00 00 00 -- 0A89F0
00 00 00 00 00 00 00 00 00 00 00 00 00 00 01 FE -- 0A8A00
00 00 00 00 00 00 00 00 00 00 00 00 00 00 00 00 -- 0A8A10
00 00 00 00 00 00 00 00 00 00 00 00 00 00 00 00 -- 0A8A20
00 00 00 00 00 00 00 00 00 00 00 00 00 00 00 00 -- 0A8A30
00 00 00 00 00 00 00 00 00 00 00 00 00 00 00 00 -- 0A8A40
00 00 00 00 00 00 00 00 00 00 00 00 00 00 00 00 -- 0A8A50
00 00 00 00 00 00 00 00 00 00 00 00 00 00 00 00 -- 0A8A60
00 00 00 00 00 00 00 00 00 00 00 00 00 00 00 00 -- 0A8A70
```

```
00 00 00 00 00 00 00 00 00 00 00 00 00 00 00 00 -- 0A8A80
00 00 00 00 00 00 00 00 00 00 00 00 00 00 00 00 -- 0A8A90
00 00 00 00 00 00 00 00 00 00 00 00 00 00 00 00 -- 0A8AA0
00 00 00 00 00 00 00 00 00 00 00 00 00 00 00 00 -- 0A8AB0
00 00 00 00 00 00 00 00 00 00 00 00 00 00 00 00 -- 0A8AC0
00 00 00 00 00 00 00 00 00 00 00 00 00 00 00 00 -- 0A8AD0
00 00 00 00 00 00 00 00 00 00 00 00 00 00 00 00 -- 0A8AE0
00 00 00 00 00 00 00 00 00 00 00 00 00 00 00 00 -- 0A8AF0
00 00 00 00 00 00 00 00 00 00 00 00 00 00 00 00 -- 0A8B00
00 00 00 00 00 00 00 00 00 00 00 00 00 00 00 00 -- 0A8B10
00 00 00 00 00 00 00 00 00 00 00 00 00 00 00 00 -- 0A8B20
00 00 00 00 00 00 00 00 00 00 00 00 00 00 00 00 -- 0A8B30
00 00 00 00 00 00 00 00 00 00 00 00 00 00 00 00 -- 0A8B40
00 00 00 00 00 00 00 00 00 00 00 00 00 00 00 00 -- 0A8B50
00 00 00 00 00 00 00 00 00 00 00 00 00 00 00 00 -- 0A8B60
00 00 00 00 00 00 00 00 00 00 00 00 00 00 00 00 -- 0A8B70
00 00 00 00 00 00 00 00 00 00 00 00 00 00 00 00 -- 0A8B80
00 00 00 00 00 00 00 00 00 00 00 00 00 00 00 00 -- 0A8B90
00 00 00 00 00 00 00 00 00 00 00 00 00 00 00 00 -- 0A8BA0
00 00 00 00 00 00 00 00 00 00 00 00 00 00 00 00 -- 0A8BB0
00 00 00 00 00 00 00 00 00 00 00 00 00 00 00 00 -- 0A8BC0
00 00 00 00 00 00 00 00 00 00 00 00 00 00 00 00 -- 0A8BD0
00 00 00 00 00 00 00 00 00 00 00 00 00 00 00 00 -- 0A8BE0
00 00 00 00 00 00 00 00 00 00 00 00 00 00 00 00 -- 0A8BF0
00 00 00 00 00 00 00 00 00 00 00 00 00 00 01 FE -- 0A8C00
00 00 00 00 00 00 00 00 00 00 00 00 00 00 00 00 -- 0A8C10
00 00 00 00 00 00 00 00 00 00 00 00 00 00 00 00 -- 0A8C20
00 00 00 00 00 00 00 00 00 00 00 00 00 00 00 00 -- 0A8C30
00 00 00 00 00 00 00 00 00 00 00 00 00 00 00 00 -- 0A8C40
00 00 00 00 00 00 00 00 00 00 00 00 00 00 00 00 -- 0A8C50
00 00 00 00 00 00 00 00 00 00 00 00 00 00 00 00 -- 0A8C60
00 00 00 00 00 00 00 00 00 00 00 00 00 00 00 00 -- 0A8C70
00 00 00 00 00 00 00 00 00 00 00 00 00 00 00 00 -- 0A8C80
00 00 00 00 00 00 00 00 00 00 00 00 00 00 00 00 -- 0A8C90

00 00 00 00 00 00 00 00 00 00 00 00 00 00 00 00 -- 0A8CA0
00 00 00 00 00 00 00 00 00 00 00 00 00 00 00 00 -- 0A8CB0
00 00 00 00 00 00 00 00 00 00 00 00 00 00 00 00 -- 0A8CC0
00 00 00 00 FF FF FF FF 00 00 FF FF 00 00 00 00 -- 0A8CD0
00 00 00 00 00 00 00 01 00 05 FF FF 00 00 00 00 -- 0A8CE0
00 00 00 00 00 00 00 00 00 00 00 00 00 00 00 00 -- 0A8CF0
00 00 00 00 00 00 00 00 00 00 00 00 00 00 00 00 -- 0A8D00
00 00 00 00 00 00 00 00 00 00 00 00 00 00 00 00 -- 0A8D10
00 00 00 00 00 00 00 00 00 00 00 00 00 00 00 00 -- 0A8D20
00 00 00 00 00 00 00 00 00 00 00 00 00 00 00 00 -- 0A8D30
00 00 00 00 00 00 00 00 00 00 00 00 00 00 00 00 -- 0A8D40
00 00 00 00 00 00 00 00 00 00 00 00 00 00 00 00 -- 0A8D50
00 00 00 00 00 00 00 00 00 00 00 00 00 00 00 00 -- 0A8D60
00 00 00 00 00 00 00 00 00 00 00 00 00 00 00 00 -- 0A8D70
00 00 00 00 00 00 00 00 00 00 00 00 00 00 00 00 -- 0A8D80
00 00 00 00 00 00 00 00 00 00 00 00 00 00 00 00 -- 0A8D90
00 00 00 00 00 00 00 00 00 00 00 00 00 00 00 00 -- 0A8DA0
00 00 00 00 00 00 00 00 00 00 00 00 00 00 00 00 -- 0A8DB0
00 00 00 00 00 00 00 00 00 00 00 00 00 00 00 00 -- 0A8DC0
00 00 00 00 00 00 00 00 00 00 00 00 00 00 00 00 -- 0A8DD0
00 00 00 00 00 00 00 00 00 00 00 00 00 00 00 00 -- 0A8DE0
00 00 00 00 00 00 00 00 00 00 00 00 00 00 00 00 -- 0A8DF0
00 00 00 00 00 00 00 00 00 00 00 00 00 00 01 FE -- 0A8E00
00 00 00 00 00 00 00 00 00 00 00 00 00 00 00 00 -- 0A8E10
00 00 00 00 00 00 00 00 00 00 00 00 00 00 00 00 -- 0A8E20
```

```
00 00 00 00 00 00 00 00 00 00 00 00 00 00 00 00 -- 0A8E30
00 00 00 00 00 00 00 00 00 00 00 00 00 00 00 00 -- 0A8E40
00 00 00 00 00 00 00 00 00 00 00 00 00 00 00 00 -- 0A8E50
00 00 00 00 00 00 00 00 00 00 00 00 00 00 00 00 -- 0A8E60
00 00 00 00 00 00 00 00 00 00 00 00 00 00 00 00 -- 0A8E70
00 00 00 00 00 00 00 00 00 00 00 00 00 00 00 00 -- 0A8E80
00 00 00 00 00 00 00 00 00 00 00 00 00 00 00 00 -- 0A8E90
00 00 00 00 00 00 00 00 00 00 00 00 00 00 00 00 -- 0A8EA0
00 00 00 00 00 00 00 00 00 00 00 00 00 00 00 00 -- 0A8EB0
00 00 00 00 00 00 00 00 00 00 00 00 00 00 00 00 -- 0A8EC0
00 00 00 00 00 00 00 00 00 00 00 00 00 00 00 00 -- 0A8ED0
00 00 00 00 00 00 00 00 00 00 00 00 00 00 00 00 -- 0A8EE0
00 00 00 00 00 00 00 00 00 00 00 00 00 00 00 00 -- 0A8EF0
00 00 00 00 00 00 00 00 00 00 00 00 00 00 00 00 -- 0A8F00
00 00 00 00 00 00 00 00 00 00 00 00 00 00 00 00 -- 0A8F10
00 00 00 00 00 00 00 00 00 00 00 00 00 00 00 00 -- 0A8F20
00 00 00 00 18 AC 00 00 00 00 00 00 00 00 00 00 -- 0A8F30
00 00 00 00 00 00 00 00 00 00 00 00 00 00 00 00 -- 0A8F40
00 00 00 00 00 00 00 00 00 00 00 00 00 00 00 00 -- 0A8F50
00 00 00 00 00 00 00 00 00 00 00 00 00 00 00 00 -- 0A8F60
00 00 00 00 00 00 00 00 00 00 00 00 00 00 00 00 -- 0A8F70
00 00 00 00 00 00 00 00 00 00 00 00 00 00 00 00 -- 0A8F80
00 00 00 00 00 00 00 00 00 00 00 00 00 00 00 00 -- 0A8F90
00 00 00 00 00 00 00 00 00 00 00 00 00 00 00 00 -- 0A8FA0
00 00 00 00 00 00 00 00 00 00 00 00 00 00 00 00 -- 0A8FB0
00 00 00 00 00 00 00 00 00 00 00 00 00 00 00 00 -- 0A8FC0
00 00 00 00 00 00 00 00 00 00 00 00 00 00 00 00 -- 0A8FD0
00 00 00 00 00 00 00 00 00 00 00 00 00 00 00 00 -- 0A8FE0
00 00 00 00 00 00 00 00 00 00 00 00 00 00 00 00 -- 0A8FF0
00 00 00 00 00 00 00 00 00 00 00 00 00 00 01 FE -- 0A9000
00 00 00 00 00 00 00 00 00 00 00 00 00 00 00 00 -- 0A9010
00 00 00 00 00 00 00 00 00 00 00 00 00 00 00 00 -- 0A9020
CC CC 40 40 00 00 00 20 00 00 00 00 00 00 00 00 -- 0A9030

00 00 00 00 00 00 00 08 00 04 00 02 00 01 3D CC -- 0A9040
00 00 00 00 00 00 00 00 00 00 00 00 00 00 00 00 -- 0A9050
00 00 00 00 00 00 00 00 00 00 00 00 00 00 00 00 -- 0A9060
00 00 00 00 00 00 00 00 00 00 00 00 00 00 00 00 -- 0A9070
00 00 00 00 00 00 00 00 00 00 00 00 00 00 00 00 -- 0A9080
00 00 00 00 00 00 00 00 00 00 00 00 00 00 00 00 -- 0A9090
00 00 00 00 00 00 00 00 00 00 00 00 00 00 00 00 -- 0A90A0
00 00 00 00 00 00 00 00 00 00 00 00 00 00 00 00 -- 0A90B0
00 00 00 00 00 00 00 00 00 00 00 00 00 00 00 00 -- 0A90C0
00 00 00 00 00 00 00 00 00 00 00 00 00 00 00 00 -- 0A90D0
00 00 00 00 00 00 00 00 00 00 00 00 00 00 00 00 -- 0A90E0
00 00 00 00 00 00 00 00 00 00 00 00 00 00 00 00 -- 0A90F0
00 00 00 00 00 00 00 00 00 00 00 00 00 00 00 00 -- 0A9100
00 00 00 00 00 00 00 00 00 00 00 00 00 00 00 00 -- 0A9110
00 00 00 00 00 00 00 00 00 00 00 00 00 00 00 00 -- 0A9120
00 00 00 00 00 00 00 00 00 00 00 00 00 00 00 00 -- 0A9130
00 00 00 00 00 00 00 00 00 00 00 00 00 00 00 00 -- 0A9140
00 00 00 00 00 00 00 00 00 00 00 00 00 00 00 00 -- 0A9150
00 00 00 00 00 00 00 00 00 00 00 00 00 00 00 00 -- 0A9160
00 00 00 00 00 00 00 00 00 00 00 00 00 00 00 00 -- 0A9170
00 00 00 00 00 00 00 00 00 00 00 00 00 00 00 00 -- 0A9180
00 00 00 00 00 00 00 00 00 00 00 00 00 00 00 00 -- 0A9190
00 00 00 00 00 00 00 00 00 00 00 00 00 00 00 00 -- 0A91A0
70 3A 64 73 3A 00 65 6D 65 74 73 79 73 70 00 00 -- 0A91B0
69 66 3F 70 2F 73 65 6C 69 66 2F 61 6D 73 69 72 -- 0A91C0
70 3A 64 73 3A 00 62 72 00 74 73 69 6C 5F 65 6C -- 0A91D0
```

743

```
69 66 3F 70 2F 73 65 6C 69 66 2F 61 6D 73 69 72 -- 0A91E0
52 4F 48 00 45 4D 41 53 00 74 73 69 6C 5F 65 6C -- 0A91F0
43 49 54 52 45 56 00 4C 41 54 4E 4F 5A 49 01 FE -- 0A9200
74 65 44 78 61 4D 00 6E 49 6D 6F 6F 5A 00 4C 41 -- 0A9210
6C 6C 75 46 00 68 73 65 72 66 65 52 00 6C 69 61 -- 0A9220
76 6F 4D 00 6B 63 61 42 6D 6F 6F 5A 00 63 69 50 -- 0A9230
41 4C 50 53 49 44 00 48 53 45 52 46 45 52 00 65 -- 0A9240
70 00 66 73 74 63 00 66 73 74 63 00 74 63 00 59 -- 0A9250
73 00 66 65 64 62 6F 6A 00 70 6D 65 74 73 79 73 -- 0A9260
63 41 00 66 65 64 73 74 69 6E 75 00 65 6C 79 74 -- 0A9270
42 00 65 63 6E 65 72 65 66 65 52 00 65 76 69 74 -- 0A9280
00 00 00 00 00 00 00 00 00 00 00 00 00 68 74 6F -- 0A9290
00 00 00 00 00 00 00 00 00 00 00 00 00 00 00 00 -- 0A92A0
00 00 00 00 00 00 00 00 00 00 00 00 00 00 00 00 -- 0A92B0
00 00 00 00 00 00 00 00 00 00 00 00 00 00 00 00 -- 0A92C0
00 00 00 00 00 00 00 00 00 00 00 00 00 00 00 00 -- 0A92D0
00 00 00 00 00 00 00 00 00 00 00 00 00 00 00 00 -- 0A92E0
00 00 00 00 00 00 00 00 00 00 00 00 00 00 00 00 -- 0A92F0
00 00 00 00 00 00 00 00 00 00 00 00 00 00 00 00 -- 0A9300
20 66 25 20 73 25 20 0A 00 00 00 00 00 00 00 00 -- 0A9310
56 20 43 44 4E 00 0A 20 66 25 20 66 25 20 66 25 -- 0A9320
FF FF 00 00 3A 20 73 69 20 74 72 6F 70 77 65 69 -- 0A9330
00 00 00 00 00 00 00 00 00 00 00 00 00 00 00 00 -- 0A9340
00 00 00 00 00 00 00 00 00 00 00 00 00 00 00 00 -- 0A9350
00 00 00 00 00 00 00 00 00 00 00 00 00 00 00 00 -- 0A9360
00 00 00 00 00 00 00 00 00 00 00 00 00 00 00 00 -- 0A9370
00 00 00 00 00 00 00 00 00 00 00 00 00 00 00 00 -- 0A9380
00 00 00 00 00 00 00 00 00 00 00 00 00 00 00 00 -- 0A9390
00 00 00 00 00 00 00 00 00 00 00 00 00 00 00 00 -- 0A93A0
00 00 00 00 00 00 00 00 00 00 00 00 00 00 00 00 -- 0A93B0
00 00 00 00 00 00 00 00 00 00 00 00 00 00 00 00 -- 0A93C0
00 00 00 00 00 00 00 00 00 00 00 00 00 00 00 00 -- 0A93D0

00 00 00 00 00 00 00 00 00 00 00 00 00 00 00 00 -- 0A93E0
00 00 00 00 00 00 00 00 00 00 00 00 00 00 00 00 -- 0A93F0
00 00 00 00 00 00 00 00 00 00 00 00 00 00 01 FE -- 0A9400
00 00 00 00 00 00 00 00 00 00 00 00 00 00 00 00 -- 0A9410
00 00 00 00 00 00 00 00 00 00 00 00 00 00 00 00 -- 0A9420
00 00 00 00 00 00 00 00 00 00 00 00 00 00 00 00 -- 0A9430
00 00 00 00 00 00 00 00 00 00 00 00 00 00 00 00 -- 0A9440
00 00 00 00 00 00 00 00 00 00 00 00 00 00 00 00 -- 0A9450
00 00 00 00 00 00 00 00 00 00 00 00 00 00 00 00 -- 0A9460
00 00 00 00 00 00 00 00 00 08 00 04 00 02 00 01 -- 0A9470
00 00 00 00 00 00 00 00 00 00 00 00 00 00 00 00 -- 0A9480
00 00 00 00 00 00 00 00 00 00 00 00 00 00 00 00 -- 0A9490
00 00 00 00 00 00 00 00 00 00 00 00 00 00 00 00 -- 0A94A0
00 00 00 00 00 00 00 00 00 00 00 00 00 00 00 00 -- 0A94B0
00 00 00 00 00 00 00 00 00 00 00 00 00 00 00 00 -- 0A94C0
00 00 00 00 00 00 00 00 00 00 00 00 00 00 00 00 -- 0A94D0
00 00 00 00 00 00 00 00 00 00 00 00 00 00 00 00 -- 0A94E0
00 00 00 00 00 00 00 00 00 00 00 00 00 00 00 00 -- 0A94F0
00 00 00 00 00 00 00 00 00 00 00 00 00 00 00 00 -- 0A9500
00 00 00 00 00 00 00 00 00 00 00 00 00 00 00 00 -- 0A9510
00 00 00 00 00 00 00 00 00 00 00 00 00 00 00 00 -- 0A9520
00 00 00 00 00 00 00 00 00 00 00 00 00 00 00 00 -- 0A9530
00 00 00 00 00 00 00 00 00 00 00 00 00 00 00 00 -- 0A9540
00 00 00 00 00 00 00 00 00 00 00 00 00 00 00 00 -- 0A9550
00 00 00 00 00 00 00 00 00 00 00 00 00 00 00 00 -- 0A9560
00 00 00 00 00 00 00 00 00 00 00 00 00 00 00 00 -- 0A9570
00 00 00 00 00 00 00 00 00 00 00 00 00 00 00 00 -- 0A9580
```

```
00 00 00 00 00 00 00 00 00 00 00 00 00 00 00 00 -- 0A9590
00 00 00 00 00 00 00 00 00 00 00 00 00 00 00 00 -- 0A95A0
73 70 00 5E 20 73 25 20 00 00 00 00 00 00 00 00 -- 0A95B0
41 54 2F 43 49 4C 42 55 50 00 65 6D 65 74 73 79 -- 0A95C0
45 4C 42 41 54 2F 43 49 4C 42 55 50 00 45 4C 42 -- 0A95D0
73 70 00 45 4C 42 41 54 00 43 49 4C 42 55 50 00 -- 0A95E0
20 20 20 20 20 20 20 20 20 00 65 6D 65 74 73 79 -- 0A95F0
20 20 20 20 20 20 00 20 20 48 54 4F 42 20 01 FE -- 0A9600
61 72 67 00 00 00 20 20 4B 53 41 4D 20 20 20 20 -- 0A9610
61 72 67 00 64 6E 65 70 73 75 73 00 64 70 75 64 -- 0A9620
65 73 75 3A 00 65 6D 75 73 65 72 00 64 70 75 64 -- 0A9630
01 00 00 62 77 00 54 41 44 2E 44 41 52 47 3A 72 -- 0A9640
00 00 00 00 00 00 00 00 04 00 04 00 04 00 04 00 -- 0A9650
00 00 00 00 00 00 00 00 00 00 00 00 00 00 00 00 -- 0A9660
00 00 00 00 00 00 00 00 00 00 00 00 00 00 00 00 -- 0A9670
00 00 00 00 00 00 00 00 00 00 00 00 00 00 00 00 -- 0A9680
00 00 00 00 00 00 00 00 00 00 00 00 00 00 00 00 -- 0A9690
00 00 00 00 00 00 00 00 00 00 00 00 00 00 00 00 -- 0A96A0
00 00 00 00 00 00 00 00 00 00 00 00 00 00 00 00 -- 0A96B0
00 00 00 00 00 00 00 00 00 00 00 00 00 00 00 00 -- 0A96C0
00 00 00 00 00 00 00 00 00 00 00 00 00 00 00 00 -- 0A96D0
00 00 00 00 00 00 00 00 00 00 00 00 00 00 00 00 -- 0A96E0
73 70 00 00 00 00 00 00 00 00 00 00 00 00 00 00 -- 0A96F0
64 70 75 73 73 61 00 4F 4E 00 65 6D 65 74 73 79 -- 0A9700
00 00 00 00 00 53 4D 2E 00 00 53 4D 4C 2E 00 00 -- 0A9710
00 00 00 00 00 00 00 00 00 00 00 00 00 00 00 00 -- 0A9720
00 00 00 00 00 00 00 00 00 00 00 00 00 00 00 00 -- 0A9730
00 00 00 00 00 00 00 00 00 00 00 00 00 00 00 00 -- 0A9740
00 00 00 00 00 00 00 00 00 00 00 00 00 00 00 00 -- 0A9750
00 00 00 00 00 00 00 00 00 00 00 00 00 00 00 00 -- 0A9760
00 00 00 00 00 00 00 00 00 00 00 00 00 00 00 00 -- 0A9770

00 00 00 00 00 00 00 00 00 00 00 00 00 00 00 00 -- 0A9780
00 00 00 00 00 00 00 00 00 00 00 00 00 00 00 00 -- 0A9790
00 00 00 00 00 00 00 00 00 00 00 00 00 00 00 00 -- 0A97A0
00 00 00 00 00 00 00 00 00 00 00 00 00 00 00 00 -- 0A97B0
00 00 00 00 00 00 00 00 00 00 00 00 00 00 00 00 -- 0A97C0
00 00 00 00 00 00 00 00 00 00 00 00 00 00 00 00 -- 0A97D0
00 00 00 00 00 00 00 00 00 00 00 00 00 00 00 00 -- 0A97E0
00 00 00 00 00 00 00 00 00 00 00 00 00 00 00 00 -- 0A97F0
00 00 00 00 00 00 00 00 00 00 00 00 00 00 01 FE -- 0A9800
00 00 00 00 00 00 00 00 00 00 00 00 00 00 00 00 -- 0A9810
00 00 00 00 00 00 00 00 00 00 00 00 00 00 00 00 -- 0A9820
72 69 41 5F 54 43 00 54 43 00 54 43 00 00 00 00 -- 0A9830
69 74 61 64 61 72 47 5F 54 43 00 68 73 75 72 62 -- 0A9840
75 43 5F 54 43 00 6B 73 61 4D 5F 54 43 00 6E 6F -- 0A9850
6B 73 61 4D 79 74 69 73 6E 65 44 5F 54 43 00 74 -- 0A9860
74 63 65 72 72 6F 43 72 6F 6C 6F 43 5F 54 43 00 -- 0A9870
47 5F 54 43 00 6B 73 61 4D 5F 54 43 00 6E 6F 69 -- 0A9880
00 00 00 00 00 00 00 00 00 54 43 00 74 73 6F 68 -- 0A9890
00 00 00 00 00 00 00 00 00 00 00 00 00 00 00 00 -- 0A98A0
00 00 00 00 00 00 00 00 00 00 00 00 00 00 00 00 -- 0A98B0
00 00 00 00 00 00 00 00 00 00 00 00 00 00 00 00 -- 0A98C0
00 00 00 00 00 00 00 00 00 00 00 00 00 00 00 00 -- 0A98D0
00 00 00 00 00 00 00 00 00 00 00 00 00 00 00 00 -- 0A98E0
00 00 00 00 00 00 00 00 00 00 00 00 00 00 00 00 -- 0A98F0
00 00 00 00 00 00 00 00 00 00 00 00 00 00 00 00 -- 0A9900
00 00 00 00 00 00 00 00 00 00 00 00 00 00 00 00 -- 0A9910
00 00 00 00 00 00 00 00 00 00 00 00 00 00 00 00 -- 0A9920
00 00 00 00 00 00 00 00 00 00 00 00 00 00 00 00 -- 0A9930
```

745

```
00 00 00 00 00 00 00 00 00 00 00 00 00 00 00 00 -- 0A9940
00 00 00 00 00 00 00 00 00 00 00 00 00 00 00 00 -- 0A9950
20 64 6E 65 20 6C 6C 69 74 20 74 69 61 57 00 00 -- 0A9960
00 20 2E 67 6E 69 73 73 65 63 6F 72 70 20 66 6F -- 0A9970
00 00 00 00 00 00 00 00 00 00 00 00 00 00 00 00 -- 0A9980
00 00 00 00 00 00 00 00 00 00 00 00 00 00 00 00 -- 0A9990
00 00 00 00 00 00 00 00 00 00 00 00 00 00 00 00 -- 0A99A0
00 00 00 00 00 00 00 00 00 00 00 00 00 00 00 00 -- 0A99B0
00 00 00 00 00 00 00 00 00 00 00 00 00 00 00 00 -- 0A99C0
00 00 00 00 00 00 00 00 00 00 00 00 00 00 00 00 -- 0A99D0
00 00 00 00 00 00 00 00 00 00 00 00 00 00 00 00 -- 0A99E0
00 00 00 00 00 00 00 00 00 00 00 00 00 00 00 00 -- 0A99F0
00 00 00 00 00 00 00 00 00 00 00 00 00 00 01 FE -- 0A9A00
00 00 00 00 00 00 00 00 00 00 00 00 00 00 00 00 -- 0A9A10
00 00 00 00 00 00 00 00 00 00 00 00 00 00 00 00 -- 0A9A20
00 00 00 00 00 00 00 00 00 00 00 00 00 00 00 00 -- 0A9A30
00 00 00 00 00 00 00 00 00 00 00 00 00 00 00 00 -- 0A9A40
00 00 00 00 00 00 00 00 00 00 00 00 00 00 00 00 -- 0A9A50
00 00 00 00 00 00 00 00 00 00 00 00 00 00 00 00 -- 0A9A60
00 00 00 00 00 00 00 00 00 00 00 00 00 00 00 00 -- 0A9A70
00 00 00 00 00 00 00 00 00 00 00 00 00 00 00 00 -- 0A9A80
00 00 00 00 00 00 00 00 00 00 00 00 00 00 00 00 -- 0A9A90
00 00 00 00 00 00 00 00 00 00 00 00 00 00 00 00 -- 0A9AA0
00 00 00 00 00 00 00 00 00 00 00 00 00 00 00 00 -- 0A9AB0
00 00 00 00 00 00 00 00 00 00 00 00 00 00 00 00 -- 0A9AC0
00 00 00 00 00 00 00 00 00 00 00 00 00 00 00 00 -- 0A9AD0
00 00 00 00 00 00 00 00 00 00 00 00 00 00 00 00 -- 0A9AE0
00 00 00 00 00 00 00 00 00 00 00 00 00 00 00 00 -- 0A9AF0
00 00 00 00 00 00 00 00 00 00 00 00 00 00 00 00 -- 0A9B00
00 00 00 00 00 00 00 00 00 00 00 00 00 00 00 00 -- 0A9B10

00 00 00 00 00 00 00 00 00 00 00 00 00 00 00 00 -- 0A9B20
00 00 00 00 00 00 00 00 00 00 00 00 00 00 00 00 -- 0A9B30
00 00 00 00 00 00 00 00 00 00 00 00 00 00 00 00 -- 0A9B40
00 00 00 00 00 00 00 00 00 00 00 00 00 00 00 00 -- 0A9B50
00 00 00 00 00 00 00 00 00 00 00 00 00 00 00 00 -- 0A9B60
20 20 20 20 00 00 00 00 00 00 00 00 00 00 00 00 -- 0A9B70
20 20 20 20 20 20 20 20 20 20 20 20 20 20 20 20 -- 0A9B80
6B 63 69 68 54 00 3A 20 20 20 20 70 65 53 00 20 -- 0A9B90
29 30 37 2D 31 28 20 20 20 64 32 25 20 3A 20 20 -- 0A9BA0
20 20 20 20 20 20 20 20 20 20 20 20 20 20 00 20 -- 0A9BB0
3A 20 74 67 6E 72 74 53 00 20 20 20 20 20 20 20 -- 0A9BC0
20 00 20 29 30 30 31 2D 31 28 20 20 64 33 25 20 -- 0A9BD0
20 20 20 20 20 20 20 20 20 20 20 20 20 20 20 20 -- 0A9BE0
31 25 20 3A 20 20 68 73 75 72 42 00 20 20 20 20 -- 0A9BF0
20 00 20 20 20 20 20 20 20 20 20 20 20 64 01 FE -- 0A9C00
20 20 20 20 20 20 20 20 20 20 20 20 20 20 20 20 -- 0A9C10
20 20 20 20 20 20 20 20 20 20 00 20 20 20 20 20 -- 0A9C20
20 6D 6F 6F 5A 00 20 20 20 20 20 20 20 20 20 20 -- 0A9C30
5A 00 66 32 2E 36 25 20 66 32 2E 36 25 20 3A 20 -- 0A9C40
2E 36 25 20 66 34 2E 36 25 20 3A 20 20 6D 6F 6F -- 0A9C50
00 00 00 00 00 00 00 00 00 00 00 00 00 00 66 34 -- 0A9C60
00 00 00 00 00 00 00 00 00 00 00 00 00 00 00 00 -- 0A9C70
00 00 00 00 00 00 00 00 00 00 00 00 00 00 00 00 -- 0A9C80
00 00 00 00 00 00 00 00 00 00 00 00 00 00 00 00 -- 0A9C90
00 00 00 00 00 00 00 00 00 00 00 00 00 00 00 00 -- 0A9CA0
00 00 00 00 00 00 00 00 00 00 00 00 00 00 00 00 -- 0A9CB0
00 00 00 00 00 00 00 00 00 00 00 00 00 00 00 00 -- 0A9CC0
00 00 00 00 00 00 00 00 00 00 00 00 00 00 00 00 -- 0A9CD0
00 00 00 00 00 00 00 00 00 00 00 00 00 00 00 00 -- 0A9CE0
```

746

```
00 00 00 00 00 00 00 00 00 00 00 00 00 00 00 00 -- 0A9CF0
00 00 00 00 00 00 00 00 00 00 00 00 00 00 00 00 -- 0A9D00
00 00 00 00 00 00 00 00 00 00 00 00 00 00 00 00 -- 0A9D10
00 00 00 00 00 00 00 00 00 00 00 00 00 00 00 00 -- 0A9D20
00 00 00 00 00 00 00 00 00 00 00 00 00 00 00 00 -- 0A9D30
00 00 00 00 00 00 00 00 00 00 00 00 00 00 00 00 -- 0A9D40
00 00 00 00 00 00 00 00 00 00 00 00 00 00 00 00 -- 0A9D50
00 00 00 00 00 00 00 00 00 00 00 00 00 00 00 00 -- 0A9D60
00 00 00 00 00 00 00 00 00 00 00 00 00 00 00 00 -- 0A9D70
00 00 00 00 00 00 00 00 00 00 00 00 00 00 00 00 -- 0A9D80
00 00 00 00 00 00 00 00 00 00 00 00 00 00 00 00 -- 0A9D90
00 00 00 00 00 00 00 00 00 00 00 00 00 00 00 00 -- 0A9DA0
00 00 00 00 00 00 00 00 00 00 00 00 00 00 00 00 -- 0A9DB0
00 00 00 00 00 00 00 00 00 00 00 00 00 00 00 00 -- 0A9DC0
00 00 00 00 00 00 00 00 00 00 00 00 00 00 00 00 -- 0A9DD0
00 00 00 00 00 00 00 00 00 00 00 00 00 00 00 00 -- 0A9DE0
00 00 00 00 00 00 00 00 00 00 00 00 00 00 00 00 -- 0A9DF0
00 00 00 00 00 00 00 00 00 00 00 00 00 00 01 FE -- 0A9E00
00 00 00 00 00 00 00 00 00 00 00 00 00 00 00 00 -- 0A9E10
00 00 00 00 00 00 00 00 00 00 00 00 00 00 00 00 -- 0A9E20
00 00 00 00 00 00 00 00 00 00 00 00 00 00 00 00 -- 0A9E30
00 79 61 6C 70 73 69 64 00 00 00 00 00 00 00 00 -- 0A9E40
73 69 64 20 00 00 00 00 00 79 61 6C 70 73 69 64 -- 0A9E50
00 00 00 00 00 00 00 00 00 00 00 00 79 61 6C 70 -- 0A9E60
00 00 00 00 00 00 00 00 00 00 00 00 00 00 00 00 -- 0A9E70
00 00 00 00 00 00 00 00 00 00 00 00 00 00 00 00 -- 0A9E80
00 00 00 00 00 00 00 00 00 00 00 00 00 00 00 00 -- 0A9E90
00 00 00 00 00 00 00 00 00 00 00 00 00 00 00 00 -- 0A9EA0
00 00 00 00 00 00 00 00 00 00 00 00 00 00 00 00 -- 0A9EB0

00 00 00 00 00 00 00 00 00 00 00 00 00 00 00 00 -- 0A9EC0
00 00 00 00 00 00 00 00 00 00 00 00 00 00 00 00 -- 0A9ED0
00 00 00 00 00 00 00 00 00 00 00 00 00 00 00 00 -- 0A9EE0
00 00 00 00 00 00 00 00 00 00 00 00 00 00 00 00 -- 0A9EF0
00 00 00 00 00 00 00 00 00 00 00 00 00 00 00 00 -- 0A9F00
00 00 00 00 00 00 00 00 00 00 00 00 00 00 00 00 -- 0A9F10
00 00 00 00 00 00 00 00 00 00 00 00 00 00 00 00 -- 0A9F20
00 00 00 00 00 00 00 00 00 00 00 00 00 00 00 00 -- 0A9F30
00 00 00 00 00 00 00 00 00 00 00 00 00 00 00 00 -- 0A9F40
00 00 00 00 00 00 00 00 00 00 00 00 00 00 00 00 -- 0A9F50
00 00 00 00 00 00 00 00 00 00 00 00 00 00 00 00 -- 0A9F60
00 00 00 00 00 00 00 00 00 00 00 00 00 00 00 00 -- 0A9F70
00 00 00 00 00 00 00 00 00 00 00 00 00 00 00 00 -- 0A9F80
00 00 00 00 00 00 00 00 00 00 00 00 00 00 00 00 -- 0A9F90
00 00 00 00 00 00 00 00 00 00 00 00 00 00 00 00 -- 0A9FA0
00 00 00 00 00 00 00 00 00 00 00 00 00 00 00 00 -- 0A9FB0
00 00 00 00 00 00 00 00 00 00 00 00 00 00 00 00 -- 0A9FC0
00 00 00 00 00 00 00 00 00 00 00 00 00 00 00 00 -- 0A9FD0
00 00 00 00 00 00 00 00 00 00 00 00 00 00 00 00 -- 0A9FE0
00 00 00 00 00 00 00 00 00 00 00 00 00 00 00 00 -- 0A9FF0
00 00 00 00 00 00 00 00 00 00 00 00 00 00 01 FE -- 0AA000
00 00 00 00 00 00 00 00 00 00 00 00 00 00 00 00 -- 0AA010
00 00 00 00 00 00 00 00 00 00 00 00 00 00 00 00 -- 0AA020
00 00 00 00 00 00 00 00 00 00 00 00 00 00 00 00 -- 0AA030
00 00 00 00 00 00 00 00 00 00 00 00 00 00 00 00 -- 0AA040
00 00 00 00 00 00 00 00 00 00 00 00 00 00 00 00 -- 0AA050
00 00 00 00 00 00 00 00 00 00 00 00 00 00 00 00 -- 0AA060
00 00 00 00 00 00 00 00 00 00 00 00 00 00 00 00 -- 0AA070
00 00 00 00 00 00 00 00 00 00 00 00 00 00 00 00 -- 0AA080
02 1C 02 35 00 00 00 00 00 00 00 00 00 00 00 00 -- 0AA090
```

```
1A 19 18 17 76 20 20 20 00 08 00 04 00 02 00 01 -- 0AA0A0
00 00 00 00 00 00 00 00 00 00 00 00 00 00 00 1B -- 0AA0B0
00 00 00 00 00 00 00 00 00 00 00 00 00 00 00 00 -- 0AA0C0
00 00 00 00 00 00 00 00 00 00 00 00 00 00 00 00 -- 0AA0D0
00 00 00 00 00 00 00 00 00 00 00 00 00 00 00 00 -- 0AA0E0
00 00 00 00 00 00 00 00 00 00 00 00 00 00 00 00 -- 0AA0F0
00 00 00 00 00 00 00 00 00 00 00 00 00 00 00 00 -- 0AA100
00 00 00 00 00 00 00 00 00 00 00 00 00 00 00 00 -- 0AA110
00 00 00 00 00 00 00 00 00 00 00 00 00 00 00 00 -- 0AA120
55 0A 00 00 00 00 00 00 00 00 00 00 00 00 00 00 -- 0AA130
74 20 64 65 6C 69 61 66 20 2D 20 46 49 53 4D 49 -- 0AA140
65 70 65 63 63 61 20 65 76 69 65 63 65 72 20 6F -- 0AA150
6E 65 6B 6F 74 20 72 65 6E 77 6F 20 64 65 74 63 -- 0AA160
20 2D 20 46 49 53 4D 49 55 4E 49 4F 4A 0A 00 2E -- 0AA170
76 69 65 63 65 72 20 6F 74 20 64 65 6C 69 61 66 -- 0AA180
6E 77 6F 20 64 65 74 63 65 70 65 63 63 61 20 65 -- 0AA190
00 00 00 00 00 00 00 2E 6E 65 6B 6F 74 20 72 65 -- 0AA1A0
00 00 FF FF 78 62 6D 73 6D 69 75 07 00 00 00 00 -- 0AA1B0
00 00 00 00 00 00 00 00 00 00 00 00 00 00 00 00 -- 0AA1C0
43 54 41 4D 00 00 00 00 00 00 00 00 00 00 00 00 -- 0AA1D0
00 20 3A 57 4C 00 3A 54 55 4F 59 41 4C 00 3A 48 -- 0AA1E0
20 20 20 20 00 20 3A 54 58 45 54 00 20 3A 54 43 -- 0AA1F0
00 00 00 00 00 00 00 00 00 00 FF FF 00 00 01 FE -- 0AA200
00 00 00 00 00 00 00 00 00 00 00 00 00 00 00 00 -- 0AA210
00 00 00 00 00 00 00 00 00 00 00 00 00 00 00 00 -- 0AA220
00 00 00 00 00 00 00 00 00 00 00 00 00 00 00 00 -- 0AA230
00 00 00 00 00 00 00 00 00 00 00 00 00 00 00 00 -- 0AA240
00 00 00 00 00 00 00 00 00 00 00 00 00 00 00 00 -- 0AA250

6F 4D 00 00 00 00 00 00 00 00 00 00 00 00 00 00 -- 0AA260
74 66 65 4C 65 76 6F 4D 00 74 68 67 69 52 65 76 -- 0AA270
6E 77 6F 44 65 76 6F 4D 00 70 55 65 76 6F 4D 00 -- 0AA280
00 00 00 00 00 00 00 00 00 00 00 00 00 00 00 00 -- 0AA290
00 00 00 00 00 00 00 00 00 00 00 00 00 00 00 00 -- 0AA2A0
00 00 00 00 00 00 00 00 00 00 00 00 00 00 00 00 -- 0AA2B0
00 00 00 00 00 00 00 00 00 00 00 00 00 00 00 00 -- 0AA2C0
00 00 00 00 00 00 00 00 00 00 00 00 00 00 00 00 -- 0AA2D0
00 00 00 00 00 00 00 00 00 00 00 00 00 00 00 00 -- 0AA2E0
00 00 00 00 00 00 00 00 00 00 00 00 00 00 00 00 -- 0AA2F0
00 00 00 00 00 00 00 00 00 00 00 00 00 00 00 00 -- 0AA300
00 00 00 00 00 00 00 00 00 00 00 00 00 00 00 00 -- 0AA310
00 00 00 00 00 00 00 00 00 00 00 00 00 00 00 00 -- 0AA320
00 00 00 00 00 00 00 00 00 00 00 00 00 00 00 00 -- 0AA330
00 00 00 00 00 00 00 00 00 00 00 00 00 00 00 00 -- 0AA340
00 00 00 00 00 00 00 00 00 00 00 00 00 00 00 00 -- 0AA350
00 00 00 00 00 00 00 00 00 00 00 00 00 00 00 00 -- 0AA360
00 00 00 00 00 07 00 00 00 00 00 00 00 00 00 00 -- 0AA370
00 00 00 00 00 00 00 00 00 00 00 00 00 00 00 00 -- 0AA380
00 00 00 00 00 00 00 00 00 00 00 00 00 00 00 00 -- 0AA390
00 00 00 00 00 00 00 00 00 00 00 00 00 00 00 00 -- 0AA3A0
00 00 00 00 00 00 00 00 00 00 00 00 00 00 00 00 -- 0AA3B0
00 00 00 00 00 00 00 00 00 00 00 00 00 00 00 00 -- 0AA3C0
00 00 00 00 00 00 00 00 00 00 00 00 00 00 00 00 -- 0AA3D0
00 00 00 00 00 00 00 00 00 00 00 00 00 00 00 00 -- 0AA3E0
64 69 75 47 00 5E 64 31 25 00 5E 64 31 25 00 00 -- 0AA3F0
64 32 25 20 3A 20 20 68 74 64 69 57 20 65 01 FE -- 0AA400
65 4C 00 74 68 67 69 52 00 6C 61 6D 72 6F 4E 00 -- 0AA410
20 20 20 20 6E 6F 69 74 63 65 72 69 44 00 74 66 -- 0AA420
69 73 6E 49 20 73 6C 65 78 69 50 00 73 25 20 3A -- 0AA430
00 02 00 0A 00 00 00 19 00 64 32 25 20 3A 65 64 -- 0AA440
```

```
00 00 00 00 FF FF 00 00 00 0A 00 00 00 00 00 FF -- 0AA450
00 00 00 00 00 00 00 00 00 00 00 05 00 00 00 00 -- 0AA460
00 00 00 00 00 00 00 00 00 00 00 00 00 00 00 00 -- 0AA470
00 00 00 00 00 00 00 00 00 00 00 00 00 00 00 00 -- 0AA480
00 00 00 00 00 00 00 00 00 00 00 00 00 00 00 00 -- 0AA490
00 00 00 00 00 00 00 00 00 00 00 00 00 00 00 00 -- 0AA4A0
00 00 00 00 00 00 00 00 00 00 00 00 00 00 00 00 -- 0AA4B0
65 72 5F 53 49 4D 00 00 00 00 00 00 00 00 00 00 -- 0AA4C0
73 65 75 71 65 72 5F 53 49 4D 00 74 73 65 75 71 -- 0AA4D0
49 4D 00 74 73 65 75 71 65 72 5F 53 49 4D 00 74 -- 0AA4E0
65 72 5F 53 49 4D 00 74 73 65 75 71 65 72 5F 53 -- 0AA4F0
73 65 75 71 65 72 5F 53 49 4D 00 74 73 65 75 71 -- 0AA500
00 74 73 65 75 71 65 72 5F 53 49 4D 00 2F 00 74 -- 0AA510
72 70 00 74 73 65 75 71 65 72 5F 53 49 4D 00 2F -- 0AA520
75 6E 5F 6E 6F 69 73 72 65 76 5F 6D 61 72 67 6F -- 0AA530
2A 2A 2A 2A 2A 2A 2A 2A 2A 2A 2A 3D 72 65 62 6D -- 0AA540
20 2C 2A 3D 6D 75 73 6B 63 65 68 63 2C 2A 2A 2A -- 0AA550
00 00 00 59 59 2F 44 44 2F 4D 4D 3D 65 74 61 64 -- 0AA560
20 20 20 20 20 20 00 00 53 53 3A 4D 4D 3A 48 48 -- 0AA570
02 6B 2E 88 00 00 20 20 20 20 20 20 20 20 20 20 -- 0AA580
00 00 76 20 20 20 00 08 00 04 00 02 00 01 01 F0 -- 0AA590
00 00 00 00 00 00 00 00 00 00 00 00 00 00 00 00 -- 0AA5A0
00 00 00 00 00 00 00 00 00 00 00 00 00 00 00 00 -- 0AA5B0
00 00 00 00 00 00 00 00 00 00 00 00 00 00 00 00 -- 0AA5C0
00 00 00 00 00 00 00 00 00 00 00 00 00 00 00 00 -- 0AA5D0
20 53 20 0A 0A 0A 00 00 00 00 00 00 00 00 00 00 -- 0AA5E0
20 6F 20 6F 20 5A 20 20 20 74 20 72 20 61 20 74 -- 0AA5F0

20 73 69 20 20 20 20 42 20 41 20 20 20 6D 01 FE -- 0AA600
20 64 20 6E 20 45 20 0A 00 0A 64 65 6C 6C 61 63 -- 0AA610
20 42 20 41 20 20 20 6D 20 6F 20 6F 20 5A 20 20 -- 0AA620
0A 0A 0A 2E 64 65 6C 6C 61 63 20 73 69 20 20 20 -- 0AA630
00 02 00 02 FF FF FF FF 00 00 00 05 00 00 00 00 -- 0AA640
00 03 00 01 00 01 00 01 00 06 00 06 00 06 00 02 -- 0AA650
00 07 00 07 00 07 00 05 00 05 00 05 00 03 00 03 -- 0AA660
00 00 00 00 00 00 FF FF 00 00 00 04 00 04 00 04 -- 0AA670
00 00 00 00 00 00 00 00 00 00 00 00 00 00 00 00 -- 0AA680
00 00 00 00 00 00 00 00 00 00 00 00 00 00 00 00 -- 0AA690
02 00 00 02 02 02 00 00 02 00 02 00 00 00 00 00 -- 0AA6A0
03 03 03 03 00 02 01 02 00 02 02 02 00 00 02 02 -- 0AA6B0
00 03 03 03 00 00 03 03 03 00 00 00 03 00 00 00 -- 0AA6C0
FF FF 00 00 FF FF FF 00 00 00 FF 00 00 00 00 03 -- 0AA6D0
00 00 00 00 00 00 FF 00 00 00 FF FF FF FF 00 FF -- 0AA6E0
00 00 65 6D 65 74 73 79 73 70 00 00 00 4E 00 00 -- 0AA6F0
00 00 00 00 00 00 00 53 4D 2E 00 00 53 4D 4C 2E -- 0AA700
00 00 00 00 00 00 00 00 00 00 00 00 00 00 00 00 -- 0AA710
00 00 00 00 00 00 00 00 00 00 00 00 00 00 00 00 -- 0AA720
20 20 00 00 00 00 00 00 00 00 00 00 00 00 00 00 -- 0AA730
00 00 76 20 20 20 02 6B 01 9E 00 30 35 20 00 20 -- 0AA740
00 00 00 00 00 00 00 00 00 00 00 00 00 00 00 00 -- 0AA750
00 00 00 00 00 00 00 00 00 00 00 00 00 00 00 00 -- 0AA760
00 00 00 00 00 00 00 00 00 00 00 00 00 00 00 00 -- 0AA770
00 00 00 00 00 00 00 00 00 00 00 00 00 00 00 00 -- 0AA780
00 00 00 00 00 00 00 00 00 00 00 00 05 00 00 00 -- 0AA790
00 00 00 00 00 00 00 00 00 00 00 00 00 00 00 00 -- 0AA7A0
00 00 00 00 00 00 00 00 00 00 00 00 00 00 00 00 -- 0AA7B0
00 00 00 00 00 00 00 00 00 00 00 00 00 00 00 00 -- 0AA7C0
00 00 00 00 00 00 00 00 00 00 00 00 00 00 00 00 -- 0AA7D0
00 00 00 00 00 00 00 00 00 00 00 00 00 00 00 00 -- 0AA7E0
00 00 00 00 00 00 00 00 00 00 00 00 00 00 00 00 -- 0AA7F0
```

```
00 00 44 7F CO 00 00 00 00 00 44 7F CO 00 01 FE -- 0AA800
00 00 00 00 00 00 00 00 00 00 00 00 00 00 00 00 -- 0AA810
00 00 00 00 00 00 00 00 00 00 00 00 00 00 00 00 -- 0AA820
6F 4D 00 74 68 67 69 52 65 76 6F 4D 00 00 00 00 -- 0AA830
00 6E 77 6F 44 65 76 6F 4D 00 74 66 65 4C 65 76 -- 0AA840
00 00 00 00 00 00 00 00 00 00 70 55 65 76 6F 4D -- 0AA850
4C 47 00 4C 41 43 4F 4C 00 00 00 00 00 00 00 00 -- 0AA860
41 42 4F 4C 47 00 4C 41 43 4F 4C 00 4C 41 42 4F -- 0AA870
00 00 4C 41 43 4F 4C 00 4C 41 42 4F 4C 47 00 4C -- 0AA880
61 65 72 63 00 00 00 00 00 00 00 00 00 00 00 00 -- 0AA890
65 20 2D 20 65 6C 67 6E 61 74 63 65 72 20 65 74 -- 0AA8A0
65 20 65 6E 69 6C 74 75 6F 20 00 0A 72 6F 72 72 -- 0AA8B0
00 00 00 00 00 00 00 00 00 00 00 00 20 0A 72 72 -- 0AA8C0
00 00 00 00 00 00 00 00 00 00 00 00 00 00 00 00 -- 0AA8D0
00 00 00 00 00 00 00 00 00 00 00 00 00 00 00 00 -- 0AA8E0
41 4C 00 54 53 41 4C 00 54 53 41 4C 00 00 00 00 -- 0AA8F0
00 00 00 00 54 53 41 4C 00 54 53 41 4C 00 54 53 -- 0AA900
36 25 00 00 00 00 00 00 00 00 00 00 00 00 00 00 -- 0AA910
00 00 00 64 33 25 00 66 33 2E 36 25 00 66 32 2E -- 0AA920
00 00 00 00 00 00 00 00 00 00 00 03 FF FF 00 00 -- 0AA930
4E 41 59 43 00 5E 66 25 00 00 00 00 00 00 00 00 -- 0AA940
00 57 4F 4C 4C 45 59 00 41 54 4E 45 47 41 4D 00 -- 0AA950
00 00 00 00 00 01 00 4C 4C 41 00 4B 43 41 4C 42 -- 0AA960
00 00 00 00 00 00 00 00 00 00 00 00 00 00 00 00 -- 0AA970
00 00 00 00 00 00 00 00 00 00 00 00 00 00 00 00 -- 0AA980
00 00 00 00 00 00 00 00 00 00 00 00 00 00 00 00 -- 0AA990

00 00 00 FF 00 00 00 FF 00 00 00 00 00 00 00 00 -- 0AA9A0
FF FF FF 00 00 00 FF 00 FF FF FF 00 00 FF FF FF -- 0AA9B0
64 6E 77 07 00 00 00 00 00 00 00 00 FF FF 00 00 -- 0AA9C0
00 00 00 00 00 00 00 00 00 00 FF FF 78 62 6D 69 -- 0AA9D0
00 00 00 00 00 00 00 FF FF 78 62 6D 73 6B 67 06 -- 0AA9E0
00 00 00 00 00 00 00 00 00 00 00 00 00 00 00 00 -- 0AA9F0
00 00 00 00 00 00 00 05 00 00 00 00 00 00 01 FE -- 0AAA00
00 47 49 46 4E 4F 43 5F 53 57 47 0A 00 00 00 00 -- 0AAA10
00 00 00 00 00 00 00 00 00 00 00 00 03 FF FF -- 0AAA20
00 00 00 00 00 00 00 00 00 00 00 00 00 00 00 00 -- 0AAA30
00 00 00 00 00 00 00 00 00 00 00 00 00 00 00 00 -- 0AAA40
50 0A 00 00 00 00 00 00 00 00 00 00 00 03 00 00 -- 0AAA50
00 00 00 00 00 00 00 53 52 45 54 45 4D 41 52 41 -- 0AAA60
64 25 00 00 00 00 00 00 00 2E 00 18 00 00 00 00 -- 0AAA70
53 05 00 00 00 00 00 00 00 00 00 00 00 00 00 5E -- 0AAA80
70 6C 65 68 03 00 00 0C 00 00 FF FF 4B 43 41 54 -- 0AAA90
00 01 00 00 00 00 43 58 45 03 00 04 00 04 00 00 -- 0AAAA0
00 00 00 00 00 00 00 00 00 00 00 00 00 00 00 0A -- 0AAAB0
00 00 00 00 00 00 00 00 00 00 00 00 00 00 00 00 -- 0AAAC0
00 00 00 00 00 00 00 00 00 00 00 00 00 00 00 00 -- 0AAAD0
00 00 00 00 00 00 00 00 00 00 00 00 00 00 00 00 -- 0AAAE0
00 00 00 00 00 00 00 00 00 00 00 00 00 00 00 00 -- 0AAAF0
00 00 00 00 00 00 00 00 00 00 00 00 00 00 00 00 -- 0AAB00
00 00 00 00 00 00 00 00 00 00 00 00 00 00 00 00 -- 0AAB10
00 00 00 00 00 00 00 00 00 00 00 00 00 00 00 00 -- 0AAB20
00 00 00 00 00 00 00 00 00 00 00 00 00 00 00 00 -- 0AAB30
00 00 00 00 00 00 00 00 00 00 00 00 00 00 00 00 -- 0AAB40
00 00 00 00 00 00 00 00 00 00 00 00 00 00 00 00 -- 0AAB50
00 00 00 00 00 00 00 00 00 00 00 00 00 00 00 00 -- 0AAB60
00 00 00 00 00 00 00 00 00 00 00 00 00 00 00 00 -- 0AAB70
00 00 00 00 00 00 00 00 00 00 00 00 00 00 00 00 -- 0AAB80
00 00 00 00 00 00 00 00 00 00 00 00 00 00 00 00 -- 0AAB90
00 00 00 00 00 00 00 00 00 00 00 00 00 00 00 00 -- 0AABA0
```

750

```
00 00 00 00 00 00 00 00 00 00 00 00 00 00 00 00 -- 0AABB0
00 00 00 00 00 00 00 00 00 00 00 00 00 00 00 00 -- 0AABC0
00 00 00 00 00 00 00 00 00 00 00 00 00 00 00 00 -- 0AABD0
00 00 00 00 00 00 00 00 00 00 00 00 00 00 00 00 -- 0AABE0
00 00 00 00 00 00 00 00 00 00 00 00 00 00 00 00 -- 0AABF0
00 00 00 00 00 00 00 00 00 00 00 00 00 00 01 FE -- 0AAC00
00 00 00 00 00 00 00 00 00 00 00 00 00 00 00 00 -- 0AAC10
00 00 00 00 00 00 00 00 00 00 00 00 00 00 00 00 -- 0AAC20
00 00 00 00 00 00 00 00 00 00 00 00 00 00 00 00 -- 0AAC30
00 00 00 00 00 00 00 00 00 00 00 00 00 00 00 00 -- 0AAC40
00 00 00 00 00 00 00 00 00 00 00 00 00 00 00 00 -- 0AAC50
00 00 00 00 00 00 00 00 00 00 00 00 00 00 00 00 -- 0AAC60
00 00 00 00 00 00 00 00 00 00 00 00 00 00 00 00 -- 0AAC70
00 00 00 00 00 00 00 00 00 00 00 00 00 00 00 00 -- 0AAC80
00 00 00 00 00 00 00 00 00 00 00 00 00 00 00 00 -- 0AAC90
00 00 00 00 00 00 00 00 00 00 00 00 00 00 00 00 -- 0AACA0
00 00 00 00 00 00 00 00 00 00 00 00 00 00 00 00 -- 0AACB0
00 00 00 00 00 00 00 00 00 00 00 00 00 00 00 00 -- 0AACC0
00 00 00 00 00 00 00 00 00 00 00 00 00 00 00 00 -- 0AACD0
00 00 00 00 00 00 00 00 00 00 00 00 00 00 00 00 -- 0AACE0
00 00 00 00 00 00 00 00 00 00 00 00 00 00 00 00 -- 0AACF0
00 00 00 00 00 00 00 00 00 00 00 00 00 00 00 00 -- 0AAD00
00 00 00 00 00 00 00 00 00 00 00 00 00 00 00 00 -- 0AAD10
00 00 00 00 00 00 00 00 00 00 00 00 00 00 00 00 -- 0AAD20
00 00 00 00 00 00 00 00 00 00 00 00 00 00 00 00 -- 0AAD30

00 00 00 00 00 00 00 00 00 00 00 00 00 00 00 00 -- 0AAD40
00 00 00 00 00 00 00 00 00 00 00 00 00 00 00 00 -- 0AAD50
00 00 00 00 00 00 00 00 00 00 00 00 00 00 00 00 -- 0AAD60
00 00 00 00 00 00 00 00 00 00 00 00 00 00 00 00 -- 0AAD70
00 00 00 00 00 00 00 00 00 00 00 00 00 00 00 00 -- 0AAD80
00 00 00 00 00 00 00 00 00 00 00 00 00 00 00 00 -- 0AAD90
00 00 00 00 00 00 00 00 00 00 00 00 00 00 00 00 -- 0AADA0
00 00 00 00 00 00 00 00 00 00 00 00 00 00 00 00 -- 0AADB0
00 00 00 00 00 00 00 00 00 00 00 00 00 00 00 00 -- 0AADC0
00 00 00 00 00 00 00 00 00 00 00 00 00 00 00 00 -- 0AADD0
00 00 00 00 00 00 00 00 00 00 00 00 00 00 00 00 -- 0AADE0
00 00 00 00 00 00 00 00 00 00 00 00 00 00 00 00 -- 0AADF0
00 00 00 00 00 00 00 00 00 00 00 00 00 00 01 FE -- 0AAE00
00 00 00 00 00 00 00 00 00 00 00 00 00 00 00 00 -- 0AAE10
00 00 00 00 00 00 00 00 00 00 00 00 00 00 00 00 -- 0AAE20
00 00 00 00 00 00 00 00 00 00 00 00 00 00 00 00 -- 0AAE30
00 00 00 00 00 00 00 00 00 00 00 00 00 00 00 00 -- 0AAE40
00 00 00 00 00 00 00 00 00 00 00 00 00 00 00 00 -- 0AAE50
00 00 00 00 00 00 00 00 00 00 00 00 00 00 00 00 -- 0AAE60
00 00 00 00 00 00 00 00 00 00 00 00 00 00 00 00 -- 0AAE70
00 00 00 00 00 00 00 00 00 00 00 00 00 00 00 00 -- 0AAE80
00 00 00 00 00 00 00 00 00 00 00 00 00 00 00 00 -- 0AAE90
00 00 00 00 00 00 00 00 00 00 00 00 00 00 00 00 -- 0AAEA0
C9 2B 01 6A 00 6A 03 6A 02 6A 00 00 0E C8 57 56 -- 0AAEB0
74 C3 23 E0 D3 00 01 B8 16 5E 8B 3B 7D 04 F9 80 -- 0AAEC0
C4 F8 03 0E 7E C5 14 6E F7 C5 FE E4 2A C5 8A 2A -- 0AAED0
26 0C 7D D3 3B D2 2B 12 5E 8B F0 03 50 58 0A 76 -- 0AAEE0
C0 EB C1 FE 58 F0 EB 42 04 C6 83 47 05 88 04 8A -- 0AAEF0
00 00 00 00 00 00 00 00 00 00 00 00 CB 5E 5F C9 -- 0AAF00
00 00 00 00 00 00 00 00 00 00 00 00 00 00 00 00 -- 0AAF10
00 00 00 00 00 00 00 00 00 00 00 00 00 00 00 00 -- 0AAF20
00 00 00 00 00 00 00 00 00 00 00 00 00 00 00 00 -- 0AAF30
00 00 00 00 00 00 00 00 00 00 00 00 00 00 00 00 -- 0AAF40
00 00 00 00 00 00 00 00 00 00 00 00 00 00 00 00 -- 0AAF50
```

```
00 00 00 00 00 00 00 00 00 00 00 00 00 00 00 00 -- 0AAF60
00 00 00 00 00 00 00 00 00 00 00 00 00 00 00 00 -- 0AAF70
00 00 00 00 00 00 00 00 00 00 00 00 00 00 00 00 -- 0AAF80
00 00 00 00 00 00 00 00 00 00 00 00 00 00 00 00 -- 0AAF90
00 00 00 00 00 00 00 00 00 00 00 00 00 00 00 00 -- 0AAFA0
00 00 00 00 00 00 00 00 00 00 00 00 00 00 00 00 -- 0AAFB0
00 00 00 00 00 00 00 00 00 00 00 00 00 00 00 00 -- 0AAFC0
00 00 00 00 00 00 00 00 00 00 00 00 00 00 00 00 -- 0AAFD0
00 00 00 00 00 00 00 00 00 00 00 00 00 00 00 00 -- 0AAFE0
00 00 00 00 00 00 00 00 00 00 00 00 00 00 00 00 -- 0AAFF0
00 00 00 00 00 00 00 00 00 00 00 00 00 00 01 FE -- 0AB000
00 00 00 00 00 00 00 00 00 00 00 00 00 00 00 00 -- 0AB010
00 00 00 00 00 00 00 00 00 00 00 00 00 00 00 00 -- 0AB020
00 00 00 00 00 00 00 00 00 00 00 00 00 00 00 00 -- 0AB030
00 00 00 00 00 00 00 00 00 00 00 00 00 00 00 00 -- 0AB040
00 00 00 00 00 00 00 00 00 00 00 00 00 00 00 00 -- 0AB050
00 00 00 00 00 00 00 00 00 00 00 00 00 00 00 00 -- 0AB060
00 00 00 00 00 00 00 00 00 00 00 00 00 00 00 00 -- 0AB070
00 00 00 00 00 00 00 00 00 00 00 00 00 00 00 00 -- 0AB080
00 00 00 00 00 00 00 00 00 00 00 00 00 00 00 00 -- 0AB090
00 00 00 00 00 00 00 00 00 00 00 00 00 00 00 00 -- 0AB0A0
00 00 00 00 00 00 00 00 00 00 00 00 00 00 00 00 -- 0AB0B0
00 00 00 00 00 00 00 00 00 00 00 00 00 00 00 00 -- 0AB0C0
00 00 00 00 00 00 00 00 00 00 00 00 00 00 00 00 -- 0AB0D0

00 00 00 00 00 00 00 00 00 00 00 00 00 00 00 00 -- 0AB0E0
00 00 00 00 00 00 00 00 00 00 00 00 00 00 00 00 -- 0AB0F0
00 00 00 00 00 00 00 00 00 00 00 00 00 00 00 00 -- 0AB100
00 00 00 00 00 00 00 00 00 00 00 00 00 00 00 00 -- 0AB110
00 00 00 00 00 00 00 00 00 00 00 00 00 00 00 00 -- 0AB120
00 00 00 00 00 00 00 00 00 00 00 00 00 00 00 00 -- 0AB130
00 00 00 00 00 00 00 00 00 00 00 00 00 00 00 00 -- 0AB140
00 00 00 00 00 00 00 00 00 00 00 00 00 00 00 00 -- 0AB150
00 00 00 00 00 00 00 00 00 00 00 00 00 00 00 00 -- 0AB160
00 00 00 00 00 00 00 00 00 00 00 00 00 00 00 00 -- 0AB170
00 00 00 00 00 00 00 00 00 00 00 00 00 00 00 00 -- 0AB180
00 00 00 00 00 00 00 00 00 00 00 00 00 00 00 00 -- 0AB190
00 00 00 00 00 00 00 00 00 00 00 00 00 00 00 00 -- 0AB1A0
00 00 00 00 00 00 00 00 00 00 00 00 00 00 00 00 -- 0AB1B0
00 00 00 00 00 00 00 00 00 00 00 00 00 00 00 00 -- 0AB1C0
00 00 00 00 00 00 00 00 00 00 00 00 00 00 00 00 -- 0AB1D0
00 00 00 00 00 00 00 00 00 00 00 00 00 00 00 00 -- 0AB1E0
00 00 00 00 00 00 00 00 00 00 00 00 00 00 00 00 -- 0AB1F0
00 00 00 00 00 00 00 00 00 00 00 00 00 00 01 FE -- 0AB200
00 00 00 00 00 00 00 00 00 00 00 00 00 00 00 00 -- 0AB210
00 00 00 00 00 00 00 00 00 00 00 00 00 00 00 00 -- 0AB220
00 00 00 00 00 00 00 00 00 00 00 00 00 00 00 00 -- 0AB230
00 00 00 00 00 00 00 00 00 00 00 00 00 00 00 00 -- 0AB240
00 00 00 00 00 00 00 00 00 00 00 00 00 00 00 00 -- 0AB250
00 00 00 00 00 00 00 00 00 00 00 00 00 00 00 00 -- 0AB260
00 00 00 00 00 00 00 00 00 00 00 00 00 00 00 00 -- 0AB270
00 00 00 00 00 00 00 00 00 00 00 00 00 00 00 00 -- 0AB280
00 00 00 00 00 00 00 00 00 00 00 00 00 00 00 00 -- 0AB290
00 00 00 00 00 00 00 00 00 00 00 00 00 00 00 00 -- 0AB2A0
00 6A 03 6A 02 6A 00 00 12 C8 57 56 00 00 00 00 -- 0AB2B0
04 F6 7E 83 00 00 F2 46 C7 00 00 F6 46 C7 01 6A -- 0AB2C0
23 59 E0 D3 F6 4E 8B 51 00 01 B8 16 5E 8B 65 7D -- 0AB2D0
F2 46 FF F2 46 8B DB 8C CF 8B 18 7E C5 4E 74 C3 -- 0AB2E0
1E F0 03 50 58 0A 76 C4 F8 03 0E 7E C5 14 6E F7 -- 0AB2F0
41 41 1F 5F F0 03 02 E0 C1 05 8B F9 8B DB 8E 57 -- 0AB300
```

752

```
8E 57 1E 47 05 88 04 8A 26 1A 7D 12 56 3B D2 2B -- 0AB310
EB 42 41 41 1F 5F F0 03 02 E0 C1 05 8B F9 8B DB -- 0AB320
00 00 00 00 00 CB 5E 5F C9 95 EB F6 46 FF 58 E1 -- 0AB330
00 00 00 00 00 00 00 00 00 00 00 00 00 00 00 00 -- 0AB340
00 00 00 00 00 00 00 00 00 00 00 00 00 00 00 00 -- 0AB350
00 00 00 00 00 00 00 00 00 00 00 00 00 00 00 00 -- 0AB360
00 00 00 00 00 00 00 00 00 00 00 00 00 00 00 00 -- 0AB370
00 00 00 00 00 00 00 00 00 00 00 00 00 00 00 00 -- 0AB380
00 00 00 00 00 00 00 00 00 00 00 00 00 00 00 00 -- 0AB390
00 00 00 00 00 00 00 00 00 00 00 00 00 00 00 00 -- 0AB3A0
00 00 00 00 00 00 00 00 00 00 00 00 00 00 00 00 -- 0AB3B0
00 00 00 00 00 00 00 00 00 00 00 00 00 00 00 00 -- 0AB3C0
00 00 00 00 00 00 00 00 00 00 00 00 00 00 00 00 -- 0AB3D0
00 00 00 00 00 00 00 00 00 00 00 00 00 00 00 00 -- 0AB3E0
00 00 00 00 00 00 00 00 00 00 00 00 00 00 00 00 -- 0AB3F0
00 00 00 00 00 00 00 00 00 00 00 00 00 00 01 FE -- 0AB400
00 00 00 00 00 00 00 00 00 00 00 00 00 00 00 00 -- 0AB410
00 00 00 00 00 00 00 00 00 00 00 00 00 00 00 00 -- 0AB420
00 00 00 00 00 00 00 00 00 00 00 00 00 00 00 00 -- 0AB430
00 00 00 00 00 00 00 00 00 00 00 00 00 00 00 00 -- 0AB440
00 00 00 00 00 00 00 00 00 00 00 00 00 00 00 00 -- 0AB450
00 00 00 00 00 00 00 00 00 00 00 00 00 00 00 00 -- 0AB460
00 00 00 00 00 00 00 00 00 00 00 00 00 00 00 00 -- 0AB470

00 00 00 00 00 00 00 00 00 00 00 00 00 00 00 00 -- 0AB480
00 00 00 00 00 00 00 00 00 00 00 00 00 00 00 00 -- 0AB490
00 00 00 00 00 00 00 00 00 00 00 00 00 00 00 00 -- 0AB4A0
00 00 00 00 00 00 00 00 00 00 00 00 00 00 00 00 -- 0AB4B0
00 00 00 00 00 00 00 00 00 00 00 00 00 00 00 00 -- 0AB4C0
00 00 00 00 00 00 00 00 00 00 00 00 00 00 00 00 -- 0AB4D0
00 00 00 00 00 00 00 00 00 00 00 00 00 00 00 00 -- 0AB4E0
00 00 00 00 00 00 00 00 00 00 00 00 00 00 00 00 -- 0AB4F0
00 00 00 00 00 00 00 00 00 00 00 00 00 00 00 00 -- 0AB500
00 00 00 00 00 00 00 00 00 00 00 00 00 00 00 00 -- 0AB510
00 00 00 00 00 00 00 00 00 00 00 00 00 00 00 00 -- 0AB520
00 00 00 00 00 00 00 00 00 00 00 00 00 00 00 00 -- 0AB530
00 00 00 00 00 00 00 00 00 00 00 00 00 00 00 00 -- 0AB540
00 00 00 00 00 00 00 00 00 00 00 00 00 00 00 00 -- 0AB550
00 00 00 00 00 00 00 00 00 00 00 00 00 00 00 00 -- 0AB560
00 00 00 00 00 00 00 00 00 00 00 00 00 00 00 00 -- 0AB570
00 00 00 00 00 00 00 00 00 00 00 00 00 00 00 00 -- 0AB580
00 00 00 00 00 00 00 00 00 00 00 00 00 00 00 00 -- 0AB590
00 00 00 00 00 00 00 00 02 00 00 00 00 00 00 00 -- 0AB5A0
00 00 00 00 00 00 00 00 00 00 00 00 00 00 00 00 -- 0AB5B0
00 00 00 00 00 00 00 00 00 00 00 00 00 00 00 00 -- 0AB5C0
00 00 00 00 00 00 00 00 00 00 00 00 00 00 00 00 -- 0AB5D0
00 00 00 00 00 00 00 00 00 00 00 00 00 00 00 00 -- 0AB5E0
00 00 00 00 00 00 00 00 00 00 00 00 00 00 00 00 -- 0AB5F0
00 00 00 00 00 00 00 00 00 00 00 00 00 00 01 FE -- 0AB600
00 00 00 00 00 00 00 00 00 00 00 00 00 00 00 00 -- 0AB610
00 00 00 00 00 00 00 00 00 00 00 00 00 00 00 00 -- 0AB620
00 00 00 00 00 00 00 00 00 00 00 00 00 00 00 00 -- 0AB630
00 00 00 00 00 00 00 00 00 00 00 00 00 00 00 00 -- 0AB640
00 00 00 00 00 00 00 00 00 00 00 00 00 00 00 00 -- 0AB650
00 00 00 00 00 00 00 00 00 00 00 00 00 00 00 00 -- 0AB660
00 00 00 00 00 00 00 00 00 00 00 00 00 00 00 00 -- 0AB670
00 00 00 00 00 00 00 00 00 00 00 00 00 00 00 00 -- 0AB680
00 00 00 00 00 00 00 00 00 00 00 00 00 00 00 00 -- 0AB690
00 00 00 00 00 00 00 00 00 00 00 00 00 00 00 00 -- 0AB6A0
00 00 1E 8E 2E 1E 00 00 00 00 00 00 00 00 00 00 -- 0AB6B0
```

```
5D AA F2 FC 08 4E 8B 0C 7E C4 0A 46 8A EC 8B 55 -- 0AB6C0
00 00 00 00 00 00 00 00 00 00 00 00 00 08 CA 1F -- 0AB6D0
00 00 00 00 00 00 00 00 00 00 00 00 00 00 00 00 -- 0AB6E0
00 00 00 00 00 00 00 00 00 00 00 00 00 00 00 00 -- 0AB6F0
00 00 00 00 00 00 00 00 00 00 00 00 00 00 00 00 -- 0AB700
00 00 00 00 00 00 00 00 00 00 00 00 00 00 00 00 -- 0AB710
00 00 00 00 00 00 00 00 00 00 00 00 00 00 00 00 -- 0AB720
00 00 00 00 00 00 00 00 00 00 00 00 00 00 00 00 -- 0AB730
00 00 00 00 00 00 00 00 00 00 00 00 00 00 00 00 -- 0AB740
00 00 00 00 00 00 00 00 00 00 00 00 00 00 00 00 -- 0AB750
00 00 00 00 00 00 00 00 00 00 00 00 00 00 00 00 -- 0AB760
00 00 00 00 00 00 00 00 00 00 00 00 00 00 00 00 -- 0AB770
00 00 00 00 00 00 00 00 00 00 00 00 00 00 00 00 -- 0AB780
00 00 00 00 00 00 00 00 00 00 00 00 00 00 00 00 -- 0AB790
00 00 00 00 00 00 00 00 00 00 00 00 00 00 00 00 -- 0AB7A0
00 00 00 00 00 00 00 00 00 00 00 00 00 00 00 00 -- 0AB7B0
00 00 00 00 00 00 00 00 00 00 00 00 00 00 00 00 -- 0AB7C0
00 00 00 00 00 00 00 00 00 00 00 00 00 00 00 00 -- 0AB7D0
00 00 00 00 00 00 00 00 00 00 00 00 00 00 00 00 -- 0AB7E0
00 00 00 00 00 00 00 00 00 00 00 00 00 00 00 00 -- 0AB7F0
00 00 00 00 00 00 00 00 00 00 00 00 00 00 01 FE -- 0AB800
00 00 00 00 00 00 00 00 00 00 00 00 00 00 00 00 -- 0AB810

00 00 00 00 00 00 00 00 00 00 00 00 00 00 00 00 -- 0AB820
00 00 00 00 00 00 00 00 00 00 00 00 00 00 00 00 -- 0AB830
00 00 00 00 00 00 00 00 00 00 00 00 00 00 00 00 -- 0AB840
00 00 00 00 00 00 00 00 00 00 00 00 00 00 00 00 -- 0AB850
00 00 00 00 00 00 00 00 00 00 00 00 00 00 00 00 -- 0AB860
00 00 00 00 00 00 00 00 00 00 00 00 00 00 00 00 -- 0AB870
00 00 00 00 00 00 00 00 00 00 00 00 00 00 00 00 -- 0AB880
00 00 00 00 00 00 00 00 00 00 00 00 00 00 00 00 -- 0AB890
00 00 00 00 00 00 00 00 00 00 00 00 00 00 00 00 -- 0AB8A0
00 00 00 00 00 00 00 00 00 00 00 00 00 00 00 00 -- 0AB8B0
00 00 00 00 00 00 00 00 00 00 00 00 00 00 00 00 -- 0AB8C0
00 00 00 00 00 00 00 00 00 00 00 00 00 00 00 00 -- 0AB8D0
00 00 00 00 00 00 00 00 00 00 00 00 00 00 00 00 -- 0AB8E0
00 00 00 00 00 00 00 00 00 00 00 00 00 00 00 00 -- 0AB8F0
00 00 00 00 00 00 00 00 00 00 00 00 00 00 00 00 -- 0AB900
00 00 00 00 00 00 00 00 00 00 00 00 00 00 00 00 -- 0AB910
00 00 00 00 00 00 00 00 00 00 00 00 00 00 00 00 -- 0AB920
00 00 00 00 00 00 00 00 00 00 00 00 00 00 00 00 -- 0AB930
00 00 00 00 00 00 00 00 00 00 00 00 00 00 00 00 -- 0AB940
00 00 00 00 00 00 00 00 00 00 00 00 00 00 00 00 -- 0AB950
00 00 00 00 00 00 00 00 00 00 00 00 00 00 00 00 -- 0AB960
00 00 00 00 00 00 00 00 00 00 00 00 00 00 00 00 -- 0AB970
00 00 00 00 00 00 00 00 00 00 00 00 00 00 00 00 -- 0AB980
00 00 00 00 00 00 00 00 00 00 00 00 00 00 00 00 -- 0AB990
00 00 00 00 00 00 00 00 00 00 00 00 00 00 00 00 -- 0AB9A0
00 00 00 00 00 00 00 00 00 00 00 00 00 00 00 00 -- 0AB9B0
00 00 00 00 00 00 00 00 00 00 00 00 00 00 00 00 -- 0AB9C0
00 00 00 00 00 00 00 00 00 00 00 00 00 00 00 00 -- 0AB9D0
00 00 00 00 00 00 00 00 00 00 00 00 00 00 00 00 -- 0AB9E0
00 00 00 00 00 00 00 00 00 00 00 00 00 00 00 00 -- 0AB9F0
00 00 00 00 00 00 00 00 00 00 00 00 00 00 01 FE -- 0ABA00
00 00 00 00 00 00 00 00 00 00 00 00 00 00 00 00 -- 0ABA10
00 00 00 00 00 00 00 00 00 00 00 00 00 00 00 00 -- 0ABA20
00 00 00 00 00 00 00 00 00 00 00 00 00 00 00 00 -- 0ABA30
00 00 00 00 00 00 00 00 00 00 00 00 00 00 00 00 -- 0ABA40
00 00 00 00 00 00 00 00 00 00 00 00 00 00 00 00 -- 0ABA50
00 00 00 00 00 00 00 00 00 00 00 00 00 00 00 00 -- 0ABA60
```

754

```
00 00 00 00 00 00 00 00 00 00 00 00 00 00 00 00 -- 0ABA70
00 00 00 00 00 00 00 00 00 00 00 00 00 00 00 00 -- 0ABA80
00 00 00 00 00 00 00 00 00 00 00 00 00 00 00 00 -- 0ABA90
00 00 00 00 00 00 00 00 00 00 00 00 00 00 00 00 -- 0ABAA0
00 00 00 00 00 00 00 00 00 00 00 00 00 00 00 00 -- 0ABAB0
02 00 EC AC 00 00 00 00 00 00 00 00 00 74 41 36 -- 0ABAC0
00 00 00 00 41 36 41 36 00 00 00 00 00 00 00 00 -- 0ABAD0
EC CB 00 58 00 0C 00 00 00 6C 00 74 00 5C 00 6C -- 0ABAE0
F0 33 EE 94 ED 6A ED 60 ED 57 ED 42 ED 32 ED 2F -- 0ABAF0
F1 60 F1 41 F1 21 F4 B2 F4 AE F4 AA F0 F3 F4 A6 -- 0ABB00
F2 27 F1 CE F1 B0 F4 C2 F4 BE F4 BA F4 B6 F1 86 -- 0ABB10
F2 A0 F2 80 F2 5C F4 CE F4 CA F4 C6 F2 31 F2 2C -- 0ABB20
F4 2E F4 26 F3 AD F3 56 F2 D0 F2 B1 F2 AC F2 A7 -- 0ABB30
1F AC 1F 8E 1F 7D 00 36 00 0D F4 9B F4 79 F4 42 -- 0ABB40
20 7B 20 5D 20 4C 20 11 20 00 1F E2 1F D1 1F BD -- 0ABB50
21 4A 21 2C 21 1B 20 E0 20 CF 20 B1 20 A0 20 8C -- 0ABB60
43 02 42 F3 42 CA 21 AF 21 9E 21 80 21 6F 21 5B -- 0ABB70
00 13 0B 06 0B 02 0A FE 0A FA 0A E6 01 1A 00 0C -- 0ABB80
00 E7 00 DF 00 BE 00 AD 00 80 00 6F 00 5C 00 4B -- 0ABB90
0B 16 0B 12 0B 0E 0B 0A 01 28 01 15 01 04 00 EC -- 0ABBA0
01 DB 01 9F 01 8E 01 59 0B 26 0B 22 0B 1E 0B 1A -- 0ABBB0

0B 3E 0B 3A 0B 36 0B 32 02 37 02 19 02 08 01 EC -- 0ABBC0
02 E7 0B 62 0B 5E 0B 5A 0B 56 0B 52 0B 4E 0B 4A -- 0ABBD0
04 8A 04 3F 03 AF 03 7F 03 3F 03 34 03 23 02 F8 -- 0ABBE0
06 3B 0B 66 05 EF 05 D2 05 03 04 E5 04 BE 04 9B -- 0ABBF0
07 7C 07 5E 07 1B 06 FD 06 BA 06 9C 06 59 01 FE -- 0ABC00
0B 7A 07 E7 07 E2 07 AF 0B 76 0B 72 0B 6E 0B 6A -- 0ABC10
08 C6 08 95 08 90 08 5D 08 2A 08 18 0B 82 0B 7E -- 0ABC20
09 EC 09 B9 09 86 09 74 09 43 09 3E 09 0B 08 D8 -- 0ABC30
0A DA 0A C8 0A 9F 0A 9A 0A 67 0A 34 0A 22 09 F1 -- 0ABC40
B7 BC B7 B8 B7 B4 B7 B0 B7 AC B7 A8 B7 A4 B7 A0 -- 0ABC50
B7 D4 B7 D0 B7 CC B3 3A B2 E4 B7 C8 B7 C4 B7 C0 -- 0ABC60
B7 E8 B7 E4 B7 E0 B7 DC B4 46 B3 D4 B3 6C B7 D8 -- 0ABC70
B5 2A B8 00 B7 FC B7 F8 B7 F4 B7 F0 B7 EC B4 B8 -- 0ABC80
B7 93 B7 84 B7 6B B6 7E B6 0C B6 00 B5 E3 B5 B8 -- 0ABC90
28 4C 28 48 28 44 28 40 28 3C 28 38 00 3C 00 0D -- 0ABCA0
27 34 26 C0 26 9A 26 95 26 74 26 6F 26 63 28 50 -- 0ABCB0
45 12 45 0E 28 24 28 01 27 DB 27 BB 27 98 27 72 -- 0ABCC0
45 03 44 F2 45 2A 45 26 45 22 45 1E 45 1A 45 16 -- 0ABCD0
C2 83 C7 0E C7 0A C7 06 C7 02 C6 FE 00 70 00 0C -- 0ABCE0
C7 1A C3 11 C3 00 C2 E1 C7 16 C7 12 C2 B4 C2 95 -- 0ABCF0
C7 3A C7 36 C7 32 C7 2E C7 2A C7 26 C7 22 C7 1E -- 0ABD00
C7 5A C7 56 C7 52 C7 4E C7 4A C7 46 C7 42 C7 3E -- 0ABD10
C3 9E C3 88 C3 74 C3 56 C3 4A C3 36 C7 62 C7 5E -- 0ABD20
C5 48 C5 22 C4 F2 C4 B0 C4 20 C3 BE C3 A8 C3 A3 -- 0ABD30
C6 88 C7 66 C6 47 C6 36 C6 22 C6 04 C5 FC C5 EF -- 0ABD40
46 04 46 00 45 FC 45 F8 00 28 00 0D C6 F1 C6 E0 -- 0ABD50
45 5E 45 49 45 44 45 3F 45 3A 45 35 46 0C 46 08 -- 0ABD60
5A 17 59 F5 45 ED 45 DB 45 BD 45 A9 45 96 45 71 -- 0ABD70
1B 2E 1B 2A 1B 26 1B 22 1B 1E 1B 1A 08 B2 00 08 -- 0ABD80
1B 4E 1B 4A 1B 46 1B 42 1B 3E 1B 3A 1B 36 1B 32 -- 0ABD90
1B 6E 1B 6A 1B 66 1B 62 1B 5E 1B 5A 1B 56 1B 52 -- 0ABDA0
1B 8E 1B 8A 1B 86 1B 82 1B 7E 1B 7A 1B 76 1B 72 -- 0ABDB0
1B AE 1B AA 1B A6 1B A2 1B 9E 1B 9A 1B 96 1B 92 -- 0ABDC0
1B CE 1B CA 1B C6 1B C2 1B BE 1B BA 1B B6 1B B2 -- 0ABDD0
1B EE 1B EA 1B E6 1B E2 1B DE 1B DA 1B D6 1B D2 -- 0ABDE0
1C 0E 1C 0A 1C 06 1C 02 1B FE 1B FA 1B F6 1B F2 -- 0ABDF0
1C 2A 1C 26 1C 22 1C 1E 1C 1A 1C 16 1C 12 01 FE -- 0ABE00
1C 4A 1C 46 1C 42 1C 3E 1C 3A 1C 36 1C 32 1C 2E -- 0ABE10
```

```
1C 6A 1C 66 1C 62 1C 5E 1C 5A 1C 56 1C 52 1C 4E -- 0ABE20
1C 8A 1C 86 1C 82 1C 7E 1C 7A 1C 76 1C 72 1C 6E -- 0ABE30
1C AA 1C A6 1C A2 1C 9E 1C 9A 1C 96 1C 92 1C 8E -- 0ABE40
1C CA 1C C6 1C C2 1C BE 1C BA 1C B6 1C B2 1C AE -- 0ABE50
1C EA 1C E6 1C E2 1C DE 1C DA 1C D6 1C D2 1C CE -- 0ABE60
1D 0A 1D 06 1D 02 1C FE 1C FA 1C F6 1C F2 1C EE -- 0ABE70
1D 2A 1D 26 1D 22 1D 1E 1D 1A 1D 16 1D 12 1D 0E -- 0ABE80
1D 4A 1D 46 1D 42 1D 3E 1D 3A 1D 36 1D 32 1D 2E -- 0ABE90
1D 6A 1D 66 1D 62 1D 5E 1D 5A 1D 56 1D 52 1D 4E -- 0ABEA0
1D 8A 1D 86 1D 82 1D 7E 1D 7A 1D 76 1D 72 1D 6E -- 0ABEB0
1D AA 1D A6 1D A2 1D 9E 1D 9A 1D 96 1D 92 1D 8E -- 0ABEC0
1D CA 1D C6 1D C2 1D BE 1D BA 1D B6 1D B2 1D AE -- 0ABED0
1D EA 1D E6 1D E2 1D DE 1D DA 1D D6 1D D2 1D CE -- 0ABEE0
1E 0A 1E 06 1E 02 1D FE 1D FA 1D F6 1D F2 1D EE -- 0ABEF0
1E 2A 1E 26 1E 22 1E 1E 1E 1A 1E 16 1E 12 1E 0E -- 0ABF00
1E 4A 1E 46 1E 42 1E 3E 1E 3A 1E 36 1E 32 1E 2E -- 0ABF10
1E 6A 1E 66 1E 62 1E 5E 1E 5A 1E 56 1E 52 1E 4E -- 0ABF20
1E 8A 1E 86 1E 82 1E 7E 1E 7A 1E 76 1E 72 1E 6E -- 0ABF30
1E AA 1E A6 1E A2 1E 9E 1E 9A 1E 96 1E 92 1E 8E -- 0ABF40
1E CA 1E C6 1E C2 1E BE 1E BA 1E B6 1E B2 1E AE -- 0ABF50

1E EA 1E E6 1E E2 1E DE 1E DA 1E D6 1E D2 1E CE -- 0ABF60
1F 0A 1F 06 1F 02 1E FE 1E FA 1E F6 1E F2 1E EE -- 0ABF70
1F 2A 1F 26 1F 22 1F 1E 1F 1A 1F 16 1F 12 1F 0E -- 0ABF80
1F 4A 1F 46 1F 42 1F 3E 1F 3A 1F 36 1F 32 1F 2E -- 0ABF90
1F 6A 1F 66 1F 62 1F 5E 1F 5A 1F 56 1F 52 1F 4E -- 0ABFA0
1F 8A 1F 86 1F 82 1F 7E 1F 7A 1F 76 1F 72 1F 6E -- 0ABFB0
1F AA 1F A6 1F A2 1F 9E 1F 9A 1F 96 1F 92 1F 8E -- 0ABFC0
1F CA 1F C6 1F C2 1F BE 1F BA 1F B6 1F B2 1F AE -- 0ABFD0
1F EA 1F E6 1F E2 1F DE 1F DA 1F D6 1F D2 1F CE -- 0ABFE0
20 0A 20 06 20 02 1F FE 1F FA 1F F6 1F F2 1F EE -- 0ABFF0
20 26 20 22 20 1E 20 1A 20 16 20 12 20 0E 01 FE -- 0AC000
20 46 20 42 20 3E 20 3A 20 36 20 32 20 2E 20 2A -- 0AC010
20 66 20 62 20 5E 20 5A 20 56 20 52 20 4E 20 4A -- 0AC020
20 86 20 82 20 7E 20 7A 20 76 20 72 20 6E 20 6A -- 0AC030
20 A6 20 A2 20 9E 20 9A 20 96 20 92 20 8E 20 8A -- 0AC040
20 C6 20 C2 20 BE 20 BA 20 B6 20 B2 20 AE 20 AA -- 0AC050
20 E6 20 E2 20 DE 20 DA 20 D6 20 D2 20 CE 20 CA -- 0AC060
21 06 21 02 20 FE 20 FA 20 F6 20 F2 20 EE 20 EA -- 0AC070
21 26 21 22 21 1E 21 1A 21 16 21 12 21 0E 21 0A -- 0AC080
21 46 21 42 21 3E 21 3A 21 36 21 32 21 2E 21 2A -- 0AC090
21 66 21 62 21 5E 21 5A 21 56 21 52 21 4E 21 4A -- 0AC0A0
21 86 21 82 21 7E 21 7A 21 76 21 72 21 6E 21 6A -- 0AC0B0
21 AA 21 A6 21 A2 21 9A 21 96 21 92 21 8E 21 8A -- 0AC0C0
21 CA 21 C6 21 C2 21 BE 21 BA 21 B6 21 B2 21 AE -- 0AC0D0
21 EA 21 E6 21 E2 21 DE 21 DA 21 D6 21 D2 21 CE -- 0AC0E0
22 0A 22 06 22 02 21 FE 21 FA 21 F6 21 F2 21 EE -- 0AC0F0
22 2A 22 26 22 22 22 1E 22 1A 22 16 22 12 22 0E -- 0AC100
22 4A 22 46 22 42 22 3E 22 3A 22 36 22 32 22 2E -- 0AC110
22 6A 22 66 22 62 22 5E 22 5A 22 56 22 52 22 4E -- 0AC120
22 8A 22 86 22 82 22 7E 22 7A 22 76 22 72 22 6E -- 0AC130
22 AA 22 A6 22 A2 22 9E 22 9A 22 96 22 92 22 8E -- 0AC140
22 CA 22 C6 22 C2 22 BE 22 BA 22 B6 22 B2 22 AE -- 0AC150
22 EA 22 E6 22 E2 22 DE 22 DA 22 D6 22 D2 22 CE -- 0AC160
23 0A 23 06 23 02 22 FE 22 FA 22 F6 22 F2 22 EE -- 0AC170
23 2A 23 26 23 22 23 1E 23 1A 23 16 23 12 23 0E -- 0AC180
23 4A 23 46 23 42 23 3E 23 3A 23 36 23 32 23 2E -- 0AC190
23 6A 23 66 23 62 23 5E 23 5A 23 56 23 52 23 4E -- 0AC1A0
23 8A 23 86 23 82 23 7E 23 7A 23 76 23 72 23 6E -- 0AC1B0
23 AA 23 A6 23 A2 23 9E 23 9A 23 96 23 92 23 8E -- 0AC1C0
```

756

```
23 CA  23 C6  23 C2  23 BE  23 BA  23 B6  23 B2  23 AE  --  0AC1D0
23 EA  23 E6  23 E2  23 DE  23 DA  23 D6  23 D2  23 CE  --  0AC1E0
24 0A  24 06  24 02  23 FE  23 FA  23 F6  23 F2  23 EE  --  0AC1F0
24 26  24 22  24 1E  24 1A  24 16  24 12  24 0E  01 FE  --  0AC200
24 46  24 42  24 3E  24 3A  24 36  24 32  24 2E  24 2A  --  0AC210
24 66  24 62  24 5E  24 5A  24 56  24 52  24 4E  24 4A  --  0AC220
24 86  24 82  24 7E  24 7A  24 76  24 72  24 6E  24 6A  --  0AC230
24 A6  24 A2  24 9E  24 9A  24 96  24 92  24 8E  24 8A  --  0AC240
24 C6  24 C2  24 BE  24 BA  24 B6  24 B2  24 AE  24 AA  --  0AC250
24 E6  24 E2  24 DE  24 DA  24 D6  24 D2  24 CE  24 CA  --  0AC260
25 06  25 02  24 FE  24 FA  24 F6  24 F2  24 EE  24 EA  --  0AC270
25 26  25 22  25 1E  25 1A  25 16  25 12  25 0E  25 0A  --  0AC280
25 46  25 42  25 3E  25 3A  25 36  25 32  25 2E  25 2A  --  0AC290
25 66  25 62  25 5E  25 5A  25 56  25 52  25 4E  25 4A  --  0AC2A0
25 86  25 82  25 7E  25 7A  25 76  25 72  25 6E  25 6A  --  0AC2B0
25 A6  25 A2  25 9E  25 9A  25 96  25 92  25 8E  25 8A  --  0AC2C0
25 C6  25 C2  25 BE  25 BA  25 B6  25 B2  25 AE  25 AA  --  0AC2D0
25 E6  25 E2  25 DE  25 DA  25 D6  25 D2  25 CE  25 CA  --  0AC2E0
26 06  26 02  25 FE  25 FA  25 F6  25 F2  25 EE  25 EA  --  0AC2F0

26 26  26 22  26 1E  26 1A  26 16  26 12  26 0E  26 0A  --  0AC300
26 46  26 42  26 3E  26 3A  26 36  26 32  26 2E  26 2A  --  0AC310
26 66  26 62  26 5E  26 5A  26 56  26 52  26 4E  26 4A  --  0AC320
26 86  26 82  26 7E  26 7A  26 76  26 72  26 6E  26 6A  --  0AC330
26 A6  26 A2  26 9E  26 9A  26 96  26 92  26 8E  26 8A  --  0AC340
26 C6  26 C2  26 BE  26 BA  26 B6  26 B2  26 AE  26 AA  --  0AC350
26 E6  26 E2  26 DE  26 DA  26 D6  26 D2  26 CE  26 CA  --  0AC360
27 06  27 02  26 FE  26 FA  26 F6  26 F2  26 EE  26 EA  --  0AC370
27 26  27 22  27 1E  27 1A  27 16  27 12  27 0E  27 0A  --  0AC380
27 46  27 42  27 3E  27 3A  27 36  27 32  27 2E  27 2A  --  0AC390
27 66  27 62  27 5E  27 5A  27 56  27 52  27 4E  27 4A  --  0AC3A0
27 86  27 82  27 7E  27 7A  27 76  27 72  27 6E  27 6A  --  0AC3B0
27 A6  27 A2  27 9E  27 9A  27 96  27 92  27 8E  27 8A  --  0AC3C0
27 C6  27 C2  27 BE  27 BA  27 B6  27 B2  27 AE  27 AA  --  0AC3D0
27 E6  27 E2  27 DE  27 DA  27 D6  27 D2  27 CE  27 CA  --  0AC3E0
28 06  28 02  27 FE  27 FA  27 F6  27 F2  27 EE  27 EA  --  0AC3F0
28 22  28 1E  28 1A  28 16  28 12  28 0E  28 0A  01 FE  --  0AC400
28 42  28 3E  28 3A  28 36  28 32  28 2E  28 2A  28 26  --  0AC410
28 62  28 5E  28 5A  28 56  28 52  28 4E  28 4A  28 46  --  0AC420
28 82  28 7E  28 7A  28 76  28 72  28 6E  28 6A  28 66  --  0AC430
28 A2  28 9E  28 9A  28 96  28 92  28 8E  28 8A  28 86  --  0AC440
28 C2  28 BE  28 BA  28 B6  28 B2  28 AE  28 AA  28 A6  --  0AC450
28 E2  28 DE  28 DA  28 D6  28 D2  28 CE  28 CA  28 C6  --  0AC460
29 02  28 FE  28 FA  28 F6  28 F2  28 EE  28 EA  28 E6  --  0AC470
29 22  29 1E  29 1A  29 16  29 12  29 0E  29 0A  29 06  --  0AC480
29 42  29 3E  29 3A  29 36  29 32  29 2E  29 2A  29 26  --  0AC490
29 62  29 5E  29 5A  29 56  29 52  29 4E  29 4A  29 46  --  0AC4A0
29 82  29 7E  29 7A  29 76  29 72  29 6E  29 6A  29 66  --  0AC4B0
29 A2  29 9E  29 9A  29 96  29 92  29 8E  29 8A  29 86  --  0AC4C0
29 C2  29 BE  29 BA  29 B6  29 B2  29 AE  29 AA  29 A6  --  0AC4D0
29 E2  29 DE  29 DA  29 D6  29 D2  29 CE  29 CA  29 C6  --  0AC4E0
2A 02  29 FE  29 FA  29 F6  29 F2  29 EE  29 EA  29 E6  --  0AC4F0
2A 22  2A 1E  2A 1A  2A 16  2A 12  2A 0E  2A 0A  2A 06  --  0AC500
2A 42  2A 3E  2A 3A  2A 36  2A 32  2A 2E  2A 2A  2A 26  --  0AC510
2A 62  2A 5E  2A 5A  2A 56  2A 52  2A 4E  2A 4A  2A 46  --  0AC520
2A 82  2A 7E  2A 7A  2A 76  2A 72  2A 6E  2A 6A  2A 66  --  0AC530
2A A2  2A 9E  2A 9A  2A 96  2A 92  2A 8E  2A 8A  2A 86  --  0AC540
2A C2  2A BE  2A BA  2A B6  2A B2  2A AE  2A AA  2A A6  --  0AC550
2A E2  2A DE  2A DA  2A D6  2A D2  2A CE  2A CA  2A C6  --  0AC560
2B 02  2A FE  2A FA  2A F6  2A F2  2A EE  2A EA  2A E6  --  0AC570
```

```
2B 22 2B 1E 2B 1A 2B 16 2B 12 2B 0E 2B 0A 2B 06 -- 0AC580
2B 42 2B 3E 2B 3A 2B 36 2B 32 2B 2E 2B 2A 2B 26 -- 0AC590
2B 62 2B 5E 2B 5A 2B 56 2B 52 2B 4E 2B 4A 2B 46 -- 0AC5A0
2B 82 2B 7E 2B 7A 2B 76 2B 72 2B 6E 2B 6A 2B 66 -- 0AC5B0
2B A2 2B 9E 2B 9A 2B 96 2B 92 2B 8E 2B 8A 2B 86 -- 0AC5C0
2B C2 2B BE 2B BA 2B B6 2B B2 2B AE 2B AA 2B A6 -- 0AC5D0
2B E2 2B DE 2B DA 2B D6 2B D2 2B CE 2B CA 2B C6 -- 0AC5E0
2C 02 2B FE 2B FA 2B F6 2B F2 2B EE 2B EA 2B E6 -- 0AC5F0
2C 1E 2C 1A 2C 16 2C 12 2C 0E 2C 0A 2C 06 01 FE -- 0AC600
2C 3E 2C 3A 2C 36 2C 32 2C 2E 2C 2A 2C 26 2C 22 -- 0AC610
2C 5E 2C 5A 2C 56 2C 52 2C 4E 2C 4A 2C 46 2C 42 -- 0AC620
2C 7E 2C 7A 2C 76 2C 72 2C 6E 2C 6A 2C 66 2C 62 -- 0AC630
AC CE AC CA AC C6 AC C2 AC BE AC BA 02 6E 00 0B -- 0AC640
AC DA AC D6 A1 8C A1 85 A1 55 A1 3C A1 1F AC D2 -- 0AC650
A2 1F A2 0B A1 F3 A1 E3 A1 CA AC E6 AC E2 AC DE -- 0AC660
AC F6 AC F2 AC EE AC EA A2 4B A2 46 A2 3D A2 32 -- 0AC670
AD 16 AD 12 AD 0E AD 0A AD 06 AD 02 AC FE AC FA -- 0AC680
A3 0D A3 08 A2 FB A2 F3 A2 EE A2 DE A2 BE AD 1A -- 0AC690

A3 81 A3 7C A3 6F A3 67 A3 62 A3 52 A3 32 A3 15 -- 0AC6A0
A4 23 A4 10 A4 01 A3 DF A3 D8 A3 AE A3 A6 A3 89 -- 0AC6B0
AD 3A AD 36 AD 32 AD 2E AD 2A AD 26 AD 22 AD 1E -- 0AC6C0
A4 C4 A4 BC A4 B7 A4 A7 A4 87 AD 46 AD 42 AD 3E -- 0AC6D0
A5 38 A5 30 A5 2B A5 1B A4 FB A4 DE A4 D6 A4 D1 -- 0AC6E0
A5 A2 A5 9D A5 94 A5 88 A5 6F A5 52 A5 4A A5 45 -- 0AC6F0
AD 4A A6 71 A6 69 A6 18 A5 EC A5 DD A5 BB A5 B4 -- 0AC700
A6 FE A6 E9 A6 E0 A6 D5 A6 BE A6 9E AD 52 AD 4E -- 0AC710
A7 9A AD 5E AD 5A AD 56 A7 62 A7 49 A7 24 A7 07 -- 0AC720
A8 65 A8 4C A8 27 A8 0A A7 FD A7 E4 A7 D7 A7 C8 -- 0AC730
AD 7E AD 7A AD 76 AD 72 AD 6E AD 6A AD 66 AD 62 -- 0AC740
AD 9E AD 9A AD 96 AD 92 AD 8E AD 8A AD 86 AD 82 -- 0AC750
A9 4B A9 31 A9 11 A8 8F AD AE AD AA AD A6 AD A2 -- 0AC760
A9 A3 A9 9B A9 96 A9 72 A9 6A A9 65 A9 58 A9 50 -- 0AC770
AA 02 A9 FD A9 F0 A9 E8 A9 E3 A9 BD A9 B5 A9 B0 -- 0AC780
AA 67 AA 4A AA 42 AA 3D AA 30 AA 28 AA 23 AA 0A -- 0AC790
AD CA AD C6 AD C2 AD BE AD BA AD B6 AD B2 AA 8C -- 0AC7A0
AB 58 AB 38 AA B6 AD DE AD DA AD D6 AD D2 AD CE -- 0AC7B0
AB D1 AB AC AB 8F AB 87 AB 82 AB 75 AB 6D AB 68 -- 0AC7C0
AC 69 AD EE AD EA AC 40 AC 1B AB FB AD E6 AD E2 -- 0AC7D0
20 20 20 1C 20 18 10 93 10 8E 20 14 AC AE AC 89 -- 0AC7E0
10 D6 10 A8 20 38 20 34 20 30 20 2C 20 28 20 24 -- 0AC7F0
11 AE 11 96 11 7D 11 44 11 3D 11 09 10 DE 01 FE -- 0AC800
20 54 20 50 20 4C 20 48 20 44 20 40 20 3C 11 BE -- 0AC810
20 74 20 70 20 6C 20 68 20 64 20 60 20 5C 20 58 -- 0AC820
13 3B 13 1F 12 A2 12 8E 12 7A 20 80 20 7C 20 78 -- 0AC830
15 A3 15 41 15 2C 14 67 14 62 14 52 14 3D 13 40 -- 0AC840
17 B1 17 9C 17 8C 17 87 16 E3 16 A6 16 26 15 B8 -- 0AC850
20 94 20 90 20 8C 18 64 18 44 18 0E 18 09 17 C3 -- 0AC860
20 A8 20 A4 20 A0 19 D3 19 34 18 D6 20 9C 20 98 -- 0AC870
1B 42 1A C5 1A B1 1A 9D 20 B8 20 B4 20 B0 20 AC -- 0AC880
1D 64 1D 4F 1C 8A 1C 85 1C 75 1C 60 1B 63 1B 5E -- 0AC890
1F 58 1F 46 1F 31 1F 21 1E C1 1E 33 1D DB 1D C6 -- 0AC8A0
1C AA 1C A6 1C A2 1C 9C 00 1C 00 0D 20 0C 20 BC -- 0AC8B0
1C 6C 1C 11 1B B6 1B 4E 1A F3 1A 98 1C B2 1C AE -- 0AC8C0
79 8A 79 86 79 82 79 7E 00 F8 00 0C 1C 93 1C 8C -- 0AC8D0
79 AA 79 A6 79 A2 79 9E 79 9A 79 96 79 92 79 8E -- 0AC8E0
72 A3 72 79 72 59 79 BE 79 BA 79 B6 79 B2 79 AE -- 0AC8F0
79 C6 79 C2 73 E5 73 CC 73 32 73 11 72 CA 72 B1 -- 0AC900
75 A4 75 48 74 EC 79 DA 79 D6 79 D2 79 CE 79 CA -- 0AC910
79 EE 79 EA 79 E6 76 57 76 35 79 E2 79 DE 75 AB -- 0AC920
```

758

```
77 41 77 3C 77 16 77 0F 76 B5 79 FA 79 F6 79 F2 -- 0AC930
69 82 78 D6 78 B8 78 60 78 47 77 BA 77 9F 77 4A -- 0AC940
62 01 61 C5 61 AB 69 96 69 92 69 8E 69 8A 69 86 -- 0AC950
63 BC 63 A9 63 96 63 74 63 31 62 D3 62 8B 62 73 -- 0AC960
64 1A 69 AA 69 A6 69 A2 69 9E 69 9A 63 E2 63 CF -- 0AC970
65 80 65 49 64 EB 69 B2 69 AE 64 73 64 52 64 3B -- 0AC980
66 3B 66 28 66 15 66 02 65 EF 65 D7 65 AC 69 B6 -- 0AC990
67 21 67 00 66 E9 66 C8 66 87 66 74 66 61 66 4E -- 0AC9A0
68 19 67 DC 67 C5 67 B8 67 A1 69 BA 67 73 67 62 -- 0AC9B0
69 1F 69 0E 68 C2 68 A4 68 90 68 72 68 5E 68 2A -- 0AC9C0
12 11 11 DF 11 C3 11 A8 11 8C 14 3E 00 2E 00 0D -- 0AC9D0
12 FE 12 E6 12 CE 12 B1 12 95 12 78 12 46 12 2E -- 0AC9E0
14 08 13 DE 13 C2 13 A7 13 82 13 6A 13 40 13 28 -- 0AC9F0
21 6F 21 60 21 53 21 46 00 D0 00 0C 14 32 01 FE -- 0ACA00
21 D5 21 BC 2B 76 2B 72 2B 6E 21 A2 21 9A 21 82 -- 0ACA10
2B 7A 23 2D 23 1C 22 F3 22 E2 22 B8 22 97 22 1F -- 0ACA20
2B 8C 2B 86 2B 82 23 C4 23 91 23 65 23 4C 2B 7E -- 0ACA30

24 8F 24 60 24 3C 24 0C 23 F4 2B 9C 2B 96 2B 90 -- 0ACA40
2B A6 2B A2 25 2F 25 15 24 FE 24 EF 24 E3 24 C3 -- 0ACA50
26 07 25 E3 25 BA 25 9C 25 89 25 75 25 5D 25 47 -- 0ACA60
26 AF 2B B2 2B AE 2B AA 26 70 26 58 26 4B 26 2B -- 0ACA70
27 BC 27 AA 27 80 27 22 26 D9 26 D4 26 CB 26 BF -- 0ACA80
28 83 28 3A 28 35 28 2C 28 20 28 13 27 F3 27 D4 -- 0ACA90
29 A6 29 86 29 6B 29 5C 29 4F 29 24 29 0B 28 E1 -- 0ACAA0
2A B4 2A 8D 2A 7B 2A 58 2A 35 2A 12 29 EF 29 CB -- 0ACAB0
2B 22 2B 1D 2B 12 2A FD 2A E7 2A E2 2A CB 2A C6 -- 0ACAC0
1D 27 1F 42 00 0E 00 0D 2B 5C 2B 57 2B 4C 2B 37 -- 0ACAD0
F5 08 00 F8 00 0B 1E 9B 1E 96 1E 3A 1D D1 1D BF -- 0ACAE0
F5 1C EA DA EA AF F5 18 F5 14 EA 68 F5 10 F5 0C -- 0ACAF0
F5 38 F5 34 F5 30 F5 2C F5 28 F5 24 EB 2C F5 20 -- 0ACB00
F5 58 F5 54 F5 50 F5 4C F5 48 F5 44 F5 40 F5 3C -- 0ACB10
F5 78 F5 74 F5 70 F5 6C F5 68 F5 64 F5 60 F5 5C -- 0ACB20
F5 98 F5 94 F5 90 F5 8C F5 88 F5 84 F5 80 F5 7C -- 0ACB30
EC 1B EB ED EB D3 EB BF EB 6F F5 A4 F5 A0 F5 9C -- 0ACB40
ED 35 ED 19 ED 02 EC E1 EC CA EC 5C EC 44 EC 32 -- 0ACB50
EE 9B EE 7B EE 54 EE 38 ED BB ED A9 ED 90 ED 4C -- 0ACB60
EF 46 EF 34 F5 AC F5 A8 EE E3 EE DC EE CF EE BD -- 0ACB70
F0 59 F0 11 EF F7 EF A5 EF 93 EF 81 EF 5A EF 53 -- 0ACB80
F1 33 F5 B4 F5 B0 F1 00 F0 D2 F0 81 F0 7A F0 6D -- 0ACB90
F2 0C F1 EB F1 B8 F1 9E F1 8A F1 59 F1 52 F1 45 -- 0ACBA0
F2 C6 F2 AF F2 93 F2 7C F2 63 F2 4D F2 35 F2 23 -- 0ACBB0
F5 D8 F5 D4 F5 D0 F5 CC F5 C8 F5 C4 F5 B8 F2 ED -- 0ACBC0
F4 A9 F4 72 F4 42 F4 1A F3 F2 F3 CA F3 56 F3 3A -- 0ACBD0
3A 96 3B D6 3B D2 00 2C 00 0D F4 FC F4 E3 F4 C2 -- 0ACBE0
3B DA 3B 2B 3B 21 3A F7 3A F2 3A E1 3A CD 3A 9B -- 0ACBF0
3B 96 3B 8A 3B 83 3B 7C 3B 75 3B 6E 3B DE 01 FE -- 0ACC00
65 86 65 82 02 88 00 09 3B CA 3B C5 3B AE 3B A0 -- 0ACC10
65 96 65 92 65 8E 46 FC 46 D2 46 BA 46 AB 65 8A -- 0ACC20
65 B6 65 B2 65 AE 65 AA 65 A6 65 A2 65 9E 65 9A -- 0ACC30
47 F6 47 E1 47 BF 47 AA 47 7F 47 61 47 43 47 34 -- 0ACC40
49 1D 49 10 49 02 48 ED 48 67 48 52 48 2A 48 0D -- 0ACC50
65 BE 65 BA 49 96 49 7C 49 69 49 59 49 3F 49 2F -- 0ACC60
49 F0 49 DF 49 D0 65 D2 65 CE 65 CA 65 C6 65 C2 -- 0ACC70
4A A2 4A 89 4A 7A 4A 59 4A 44 4A 35 4A 27 4A 12 -- 0ACC80
4B 26 4B 1C 4B 15 4B 01 4A F6 4A E5 4A C9 4A BB -- 0ACC90
4B A2 4B 98 4B 8A 4B 85 4B 80 4B 6F 4B 38 4B 30 -- 0ACCA0
65 DE 65 DA 65 D6 4B E8 4B DC 4B D4 4B BC 4B A7 -- 0ACCB0
65 FE 65 FA 65 F6 65 F2 65 EE 65 EA 65 E6 65 E2 -- 0ACCC0
66 1E 66 1A 66 16 66 12 66 0E 66 0A 66 06 66 02 -- 0ACCD0
```

759

```
66 3E 66 3A 66 36 66 32 66 2E 66 2A 66 26 66 22 -- 0ACCE0
66 56 66 52 66 4E 4D 2D 4D 0B 66 4A 66 46 66 42 -- 0ACCF0
4E 16 4D FB 66 6E 66 6A 66 66 66 62 66 5E 66 5A -- 0ACD00
4F 25 4E ED 4E D5 4E CB 4E B7 4E A6 4E 9E 4E 8A -- 0ACD10
50 4C 50 38 4F FC 4F C4 4F B0 4F 81 4F 6D 4F 4C -- 0ACD20
66 7E 66 7A 66 76 66 72 50 86 50 6E 50 65 50 5E -- 0ACD30
66 9E 66 9A 66 96 66 92 66 8E 66 8A 66 86 66 82 -- 0ACD40
51 23 51 18 50 FF 50 E5 50 DE 66 AA 66 A6 66 A2 -- 0ACD50
52 07 51 DC 51 C8 51 B4 51 95 51 54 51 46 51 34 -- 0ACD60
52 D5 52 C9 52 C4 52 B5 52 AD 52 9C 52 8A 52 35 -- 0ACD70
53 96 53 75 53 58 53 4E 53 46 53 19 53 01 52 DF -- 0ACD80
53 E5 53 E0 53 DB 53 D6 53 C7 66 B6 66 B2 66 AE -- 0ACD90
54 A8 54 8D 54 85 54 63 54 4B 54 33 54 1B 54 03 -- 0ACDA0
55 4D 55 48 55 36 54 FE 54 EC 54 DD 54 D5 54 BA -- 0ACDB0
55 D2 55 B7 55 94 55 7F 55 77 55 5E 55 59 55 54 -- 0ACDC0
56 95 56 71 56 5D 56 4B 56 46 56 3E 56 17 55 E5 -- 0ACDD0

57 1B 57 14 57 0D 56 DD 56 CB 56 C3 56 A4 56 9D -- 0ACDE0
66 BE 66 BA 57 C0 57 A0 57 80 57 60 57 3A 57 29 -- 0ACDF0
58 43 58 0E 57 FB 66 CE 66 CA 66 C6 66 C2 01 FE -- 0ACE00
59 36 59 16 59 04 58 EC 58 C1 58 AD 58 77 58 5E -- 0ACE10
5A 3C 5A 1C 5A 10 5A 0B 5A 03 59 E3 59 B7 59 93 -- 0ACE20
5B 8E 5A F7 5A F2 5A E7 5A DF 5A BF 5A A3 5A 54 -- 0ACE30
5D D8 5D 67 5D 29 5C B9 5C A8 5C 5D 5C 23 5B D9 -- 0ACE40
66 DE 66 DA 66 D6 66 D2 5E 31 5E 22 5E 11 5D E9 -- 0ACE50
60 0C 66 E2 5F DC 5F CE 5F B4 5F 68 5F 2A 5F 23 -- 0ACE60
66 EA 66 E6 60 CE 60 BF 60 B7 60 A3 60 89 60 37 -- 0ACE70
63 66 66 F2 63 0C 62 FB 62 74 61 BF 61 75 66 EE -- 0ACE80
64 8E 64 59 64 12 63 FC 63 EE 63 D1 63 BF 63 A1 -- 0ACE90
4D 02 4C FE 4C FA 01 6C 00 0B 65 79 65 5A 64 AF -- 0ACEA0
4D 12 4D 0E 4D 0A 4D 06 3F 9B 3F 7B 3F 27 3F 0F -- 0ACEB0
40 8E 40 7A 40 63 4D 16 40 3C 40 1F 40 08 3F D1 -- 0ACEC0
41 2B 4D 2A 4D 26 4D 22 41 09 40 F5 4D 1E 4D 1A -- 0ACED0
42 03 41 EF 41 E2 41 CB 41 AC 4D 2E 41 7B 41 52 -- 0ACEE0
42 75 42 69 42 4F 42 3F 4D 54 4D 4E 4D 32 42 22 -- 0ACEF0
43 0D 42 F1 42 DB 42 CA 42 B6 42 A2 42 90 42 80 -- 0ACF00
43 AC 4D 60 43 7B 43 62 4D 5C 4D 58 43 43 43 27 -- 0ACF10
4D 74 4D 70 4D 6C 4D 68 4D 64 43 DC 43 CE 43 C0 -- 0ACF20
44 30 44 24 44 16 44 09 4D 84 4D 80 4D 7C 4D 78 -- 0ACF30
44 F0 44 DA 44 B8 44 AB 44 95 44 87 44 60 44 47 -- 0ACF40
45 BD 45 B8 45 97 45 89 45 6A 45 41 45 33 45 02 -- 0ACF50
46 43 46 37 46 18 46 0C 45 F5 45 E9 45 D2 45 C4 -- 0ACF60
4D 88 46 CB 46 B4 46 AA 46 98 46 87 46 66 46 5A -- 0ACF70
4D 98 47 98 4D 94 47 80 4D 90 47 60 4D 8C 47 11 -- 0ACF80
4D A8 48 3C 48 20 4D A4 47 F2 4D A0 4D 9C 47 C5 -- 0ACF90
48 FC 4D B0 48 D8 4D AC 48 B1 48 8D 48 70 48 60 -- 0ACFA0
49 87 49 7F 49 75 49 70 49 5F 49 4D 49 29 49 0C -- 0ACFB0
4D BC 4D B8 4D B4 49 AC 49 9B 49 96 49 91 49 8C -- 0ACFC0
4D CC 4D C8 4D C4 4D C0 4A 18 4A 11 4A 0A 49 E6 -- 0ACFD0
4A 8A 4A 76 4A 71 4A 6C 4A 63 4A 58 4A 48 4D D0 -- 0ACFE0
4D E0 4D DC 4D D8 4D D4 4B 0D 4A F7 4A D6 4A B0 -- 0ACFF0
4B 49 4D F8 4D F4 4D F0 4D EC 4D E8 4D E4 01 FE -- 0AD000
00 B3 00 6A 01 8A 00 0A 4D FC 4C 77 4C 33 4B 92 -- 0AD010
01 84 01 5C 01 41 01 13 00 F2 00 E1 1A 02 19 FE -- 0AD020
1A 10 02 58 02 45 02 40 02 21 01 F5 01 DA 01 AC -- 0AD030
02 E6 02 D5 1A 28 1A 24 1A 20 1A 1C 1A 18 1A 14 -- 0AD040
04 E6 04 D8 04 B3 04 8A 04 53 03 E4 03 AB 03 2E -- 0AD050
05 7A 05 60 05 51 1A 34 1A 30 1A 2C 05 25 05 14 -- 0AD060
06 9D 1A 40 05 E8 05 CC 1A 3C 1A 38 05 B2 05 88 -- 0AD070
1A 60 1A 5C 1A 58 1A 54 1A 50 1A 4C 1A 48 1A 44 -- 0AD080
```

760

```
07 F9 07 E8 07 C0 07 AF 07 3E 07 34 07 19 1A 64 -- 0AD090
08 DA 08 D5 08 AC 08 9F 08 9A 1A 68 08 52 08 34 -- 0AD0A0
09 85 09 5F 09 52 09 4D 09 23 09 16 09 11 08 E7 -- 0AD0B0
0A 72 0A 2D 0A 17 0A 02 09 EC 09 C6 09 B0 09 9A -- 0AD0C0
0C 6B 0C 3F 0C 13 0B DF 0B AF 0B 82 0B 52 0A 99 -- 0AD0D0
0D F3 0D CB 0D A1 0D 63 0D 2F 0D 03 0C D3 0C 9F -- 0AD0E0
0F 6B 0F 55 0F 21 0E E0 0E B2 0E 8A 0E 5C 0E 21 -- 0AD0F0
10 9D 10 78 10 66 1A 7A 1A 76 0F E3 0F CD 0F 99 -- 0AD100
12 0C 11 F1 11 71 11 19 10 FD 10 DD 10 CB 10 BD -- 0AD110
1A 82 1A 7E 12 B7 12 9F 12 76 12 4F 12 38 12 27 -- 0AD120
13 A5 13 93 13 73 1A 8A 13 3C 13 11 1A 86 12 EE -- 0AD130
14 67 14 3D 14 36 1A 8E 14 12 14 05 13 E1 13 C5 -- 0AD140
17 02 16 E5 16 C7 16 8F 1A 92 14 F1 14 89 14 76 -- 0AD150
17 88 17 81 17 7C 17 50 17 49 17 36 17 31 1A 96 -- 0AD160
1A 9A 17 FD 17 E4 17 B1 17 AC 17 A5 17 A0 17 8D -- 0AD170

19 29 19 22 19 1B 19 14 18 D3 18 AC 18 85 18 5E -- 0AD180
19 BD 19 85 19 7E 19 77 19 45 19 3E 19 37 19 30 -- 0AD190
67 30 85 F0 85 EC 05 3C 00 09 19 F3 19 E2 19 CE -- 0AD1A0
67 82 67 7D 85 F4 67 4D 67 48 67 41 67 3C 67 35 -- 0AD1B0
67 E7 67 CB 67 B8 85 F8 67 A4 67 9F 67 98 67 93 -- 0AD1C0
69 4B 69 24 69 08 68 E5 68 65 68 46 68 23 86 06 -- 0AD1D0
86 0A 6A 68 6A 49 6A 30 69 E5 69 D3 69 A1 69 6F -- 0AD1E0
6B F7 6B DA 6B C6 6B BE 6B A4 6B 2A 6A FA 86 0E -- 0AD1F0
86 22 86 1E 86 1A 86 16 86 12 6C 59 6C 29 01 FE -- 0AD200
6C F4 6C DD 6C D0 6C C3 86 3A 86 36 86 32 86 26 -- 0AD210
6E 02 6D F3 6D E5 6D D0 6D B3 6D 94 6D 6C 6D 30 -- 0AD220
6F 35 6F 03 6E E5 6E C9 6E 9F 6E 74 6E 44 6E 1E -- 0AD230
86 5A 86 56 86 52 86 4E 86 4A 86 46 86 42 86 3E -- 0AD240
70 8A 86 66 70 5B 70 3A 70 2F 70 13 86 62 86 5E -- 0AD250
86 7E 86 7A 86 76 86 72 86 6E 86 6A 70 A9 70 A4 -- 0AD260
71 6F 71 4D 71 39 71 0E 70 F0 70 E1 86 86 86 82 -- 0AD270
72 72 72 64 72 50 71 F3 71 DF 71 B7 71 9A 71 83 -- 0AD280
86 8A 72 F8 72 DE 72 CB 72 BB 72 A1 72 91 72 7F -- 0AD290
73 87 73 68 73 52 73 41 73 32 86 96 86 92 86 8E -- 0AD2A0
86 9E 86 9A 74 15 74 08 73 E9 73 D0 73 B7 73 A8 -- 0AD2B0
74 81 74 6F 86 AE 86 AA 86 A6 86 A2 74 54 74 39 -- 0AD2C0
86 BE 86 BA 86 B6 86 B2 74 E8 74 BE 74 A5 74 93 -- 0AD2D0
86 DE 86 DA 86 D6 86 D2 86 CE 86 CA 86 C6 86 C2 -- 0AD2E0
75 B3 75 AA 75 98 75 7F 75 64 75 2F 74 FF 86 E2 -- 0AD2F0
76 F0 76 E8 76 C6 76 B8 76 97 76 62 76 29 75 EA -- 0AD300
86 F6 86 F2 86 EE 86 EA 86 E6 77 05 77 00 76 F5 -- 0AD310
77 F5 77 E7 77 CB 77 9B 77 73 77 2F 86 FE 86 FA -- 0AD320
79 04 78 FF 78 F4 78 EC 78 97 78 42 78 34 78 09 -- 0AD330
79 CE 79 A3 79 96 79 62 87 02 79 40 79 23 79 0F -- 0AD340
87 0A 7A 34 7A 27 7A 04 79 FA 79 EA 87 06 79 D6 -- 0AD350
87 1E 87 1A 87 16 7A 96 7A 7E 7A 67 87 12 87 0E -- 0AD360
7B 1E 7B 0C 7A CA 7A BC 7A AD 87 2A 87 26 87 22 -- 0AD370
7B F6 7B DA 7B C8 7B AF 7B 96 7B 7F 7B 51 7B 3D -- 0AD380
87 2E 7C 82 7C 75 7C 61 7C 59 7C 40 7C 2E 7C 12 -- 0AD390
7D 5E 7D 2C 7D 0E 7C FC 7C D6 7C BA 87 36 87 32 -- 0AD3A0
7E 8A 7E 6E 7E 3E 7E 1B 7E 07 7D D2 7D C3 7D 9C -- 0AD3B0
7F 5C 7F 22 7F 18 7F 0D 7E F1 7E B6 87 3E 87 3A -- 0AD3C0
7F F6 7F EB 7F CD 7F BB 7F 9D 7F 98 7F 90 7F 7F -- 0AD3D0
87 52 87 4E 87 4A 87 46 87 42 80 4D 80 2C 80 17 -- 0AD3E0
81 3E 81 2D 81 1B 80 E5 80 C6 80 A8 87 5A 87 56 -- 0AD3F0
81 AC 81 9B 81 77 81 72 81 67 81 52 81 4D 01 FE -- 0AD400
82 B9 82 AF 82 95 82 77 82 46 81 D9 81 C8 81 B4 -- 0AD410
83 6B 83 5D 83 48 83 2B 83 09 82 FA 82 DB 82 C1 -- 0AD420
84 90 84 4B 84 24 84 1F 84 11 83 E8 83 C6 83 87 -- 0AD430
```

761

```
85 67 87 5E 85 4D 85 43 85 32 85 0F 84 DE 84 9B -- 0AD440
23 B2 23 AE 23 AA 23 A6 23 A2 85 E1 85 CD 85 9A -- 0AD450
00 3F 00 1B 23 CA 23 C6 23 C2 23 BE 23 BA 23 B6 -- 0AD460
00 ED 00 DE 00 BB 00 B6 00 B1 00 9F 00 65 00 47 -- 0AD470
01 91 01 72 01 61 01 47 01 26 01 21 01 12 01 0A -- 0AD480
23 E6 23 E2 23 DE 23 DA 23 D6 23 D2 23 CE 01 99 -- 0AD490
01 D6 01 CA 01 C2 23 FA 23 F6 23 F2 23 EE 23 EA -- 0AD4A0
03 23 03 0E 02 E6 02 B2 02 7E 02 4F 02 25 01 FB -- 0AD4B0
24 0A 24 06 24 02 23 FE 03 84 03 72 03 67 03 56 -- 0AD4C0
24 2A 24 26 24 22 24 1E 24 1A 24 16 24 12 24 0E -- 0AD4D0
04 3D 04 13 03 E9 03 C4 03 B8 03 B0 24 32 24 2E -- 0AD4E0
05 A0 05 51 05 35 05 2B 05 0C 04 E4 04 B0 04 7C -- 0AD4F0
06 72 24 3E 06 38 06 0C 05 D9 24 3A 24 36 05 AE -- 0AD500
08 43 08 24 08 12 07 F6 07 D1 06 E2 06 BA 06 8E -- 0AD510

08 F6 08 DA 08 BF 08 A4 08 8D 08 7A 24 4E 24 4A -- 0AD520
09 F3 09 E9 09 D5 09 A7 09 9A 09 90 09 72 09 40 -- 0AD530
0A AE 0A 8D 0A 77 0A 60 0A 4D 0A 42 0A 32 0A 00 -- 0AD540
0B BE 0B 9E 0B 77 0B 4C 0B 3F 0B 18 0A F1 0A CB -- 0AD550
0C B0 0C A3 0C 86 0C 4B 0C 3E 0C 18 0B F1 0B CB -- 0AD560
24 56 24 52 0D 96 0D 80 0D 6A 0D 58 0D 32 0D 0A -- 0AD570
0F 24 0F 12 0E B0 0E A3 0E 5F 0E 52 0E 12 0D E1 -- 0AD580
0F FE 0F F9 0F D8 0F B0 0F 98 24 5A 0F 59 0F 3A -- 0AD590
11 00 10 D6 10 C9 10 C4 10 AC 10 44 10 2E 10 18 -- 0AD5A0
11 B0 11 78 11 6B 11 66 11 4E 11 2A 11 1D 11 18 -- 0AD5B0
12 8D 12 80 12 7B 12 63 12 3E 11 DA 11 CD 11 C8 -- 0AD5C0
13 5F 13 4E 13 3C 13 37 13 1E 12 F0 12 D7 12 BF -- 0AD5D0
13 DA 13 B2 24 7A 24 76 24 6A 24 5E 13 8F 13 6B -- 0AD5E0
24 8E 24 8A 24 86 24 82 24 7E 14 44 14 19 13 F5 -- 0AD5F0
16 29 16 0C 15 9D 15 6F 15 49 14 D8 24 92 01 FE -- 0AD600
24 9A 24 96 16 F1 16 E4 16 C7 16 98 16 65 16 4F -- 0AD610
17 F4 17 D2 17 CA 17 93 17 67 17 45 24 A2 24 9E -- 0AD620
18 8B 18 47 18 3C 18 33 18 2A 18 1F 18 08 17 FD -- 0AD630
24 AE 24 AA 24 A6 19 3B 19 19 18 FF 18 DD 18 C2 -- 0AD640
1A 8B 1A 62 24 B6 1A 32 1A 12 19 C3 19 A5 24 B2 -- 0AD650
1B 3E 1B 32 1B 15 1B 10 1B 0B 1A E3 1A CF 1A 9C -- 0AD660
1C 0E 1B F5 1B DE 1B AD 1B 86 1B 59 1B 54 1B 43 -- 0AD670
1D 2B 1D 15 1C FE 1C B4 1C 84 1C 7D 1C 75 1C 64 -- 0AD680
1E 39 1E 18 1D FD 1D BE 1D 99 1D 7D 1D 78 1D 60 -- 0AD690
1F 43 1F 2B 1F 06 1E E5 1E CF 1E B8 1E 93 1E 63 -- 0AD6A0
20 3A 20 15 1F E0 1F C3 1F AC 1F 89 1F 64 1F 48 -- 0AD6B0
21 0E 20 E4 20 DF 20 C8 20 B2 20 9C 20 85 20 60 -- 0AD6C0
21 CB 21 A9 21 92 21 8D 21 76 21 60 21 4A 21 33 -- 0AD6D0
04 5A 00 07 23 41 23 34 23 18 22 86 22 79 22 5D -- 0AD6E0
DA A9 DA 90 DA 6E DA 12 D9 C0 FD D0 FD CC FD C8 -- 0AD6F0
FD DC FD D8 DB 5C DB 4B DB 30 DA F7 DA E6 DA CC -- 0AD700
DD 39 DD 27 DD 22 DD 16 DC 75 FD E4 FD E0 DC 46 -- 0AD710
FD F2 FD EE FD EA DD 74 DD 6F DD 59 DD 54 DD 3E -- 0AD720
E4 0B E3 C6 E3 92 E3 4D E2 E2 E2 7A E0 4C E0 12 -- 0AD730
E6 47 E6 23 E5 D0 E5 AC E5 88 E5 66 E5 05 E4 C4 -- 0AD740
E9 4F E8 9D FD F8 E7 AD E7 7F E7 16 E6 E8 E6 77 -- 0AD750
EB BD EB B5 EB 54 EA FA EA BD EA 92 EA 3C EA 01 -- 0AD760
FE 14 FE 10 FE 0C FE 08 FE 04 EB E9 EB DE EB D5 -- 0AD770
EE 92 EE 1E ED D5 FE 1C ED B1 ED 98 ED 3C FE 18 -- 0AD780
EF 47 EF 29 EF 1C EF 0D EE E5 EE C9 FE 24 FE 20 -- 0AD790
F0 09 EF D3 FE 2C FE 28 EF AE EF 90 EF 83 EF 74 -- 0AD7A0
F0 F6 F0 CB F0 6D FE 3C FE 38 FE 34 FE 30 F0 41 -- 0AD7B0
F1 E6 F1 AC FE 68 FE 64 FE 60 FE 5C FE 50 F1 00 -- 0AD7C0
F3 34 F3 02 F2 D6 F2 BE F2 27 F2 1D F2 0F FE 74 -- 0AD7D0
F4 62 F4 25 F3 F3 F3 C7 FE 88 FE 84 FE 80 F3 5A -- 0AD7E0
```

```
F5 A3  F5 6D  F5 3F  F5 09  F4 DB  F4 BB  F4 99  F4 7B  --  0AD7F0
F6 4F  F6 44  F6 2B  F6 20  F6 14  F6 08  F5 E9  01 FE  --  0AD800
FE 8C  F7 62  F7 0E  F6 F7  F6 ED  F6 DF  F6 CB  F6 AE  --  0AD810
F8 98  F8 6A  F8 44  F8 2C  FE 90  F7 EE  F7 C8  F7 AA  --  0AD820
F9 EA  F9 AB  F9 89  F9 4E  F9 1B  F8 EC  F8 D1  F8 B9  --  0AD830
FB 03  FA C0  FA A3  FA 71  FA 4E  FA 3C  FE 98  FE 94  --  0AD840
FE 9C  FC 21  FB ED  FB AA  FB 8D  FB 5B  FB 38  FB 26  --  0AD850
FC AA  FC 73  FC 52  FC 45  FE AC  FE A8  FE A4  FE A0  --  0AD860
B5 0D  B4 F8  B4 E2  B4 99  B4 80  D8 16  D8 12  FC CF  --  0AD870
D8 2E  D8 2A  D8 26  D8 22  D8 1E  D8 1A  B5 4B  B5 34  --  0AD880
B5 F5  B5 D0  B5 C1  B5 9F  B5 90  D8 3A  D8 36  D8 32  --  0AD890
B6 F2  B6 E5  B6 D8  B6 AF  B6 84  B6 5D  B6 1E  B6 0E  --  0AD8A0
B8 73  D8 4A  D8 46  B8 48  B8 36  B8 1E  B7 A3  B7 9E  --  0AD8B0

B9 34  B8 E0  D8 56  D8 52  D8 4E  B8 BD  B8 A5  B8 8F  --  0AD8C0
BA 2D  B9 D0  D8 5E  D8 5A  B9 A4  B9 93  B9 85  B9 5A  --  0AD8D0
BB 4F  BB 41  BB 2A  BB 04  BA AD  BA 97  BA 86  BA 60  --  0AD8E0
BC A2  BC 5C  BC 48  BC 12  BC 01  BB D2  BB A8  BB 7C  --  0AD8F0
BD A8  BD 8E  BD 73  BD 66  BD 36  BD 0A  BC F9  BC B3  --  0AD900
BF 2A  BF 04  BE D1  BE A1  BE 65  BE 54  BE 2E  BD FB  --  0AD910
D8 6E  D8 62  C0 27  C0 19  C0 02  BF BC  BF 89  BF 44  --  0AD920
C0 CA  C0 BD  C0 A9  C0 96  C0 91  C0 7F  C0 6D  D8 72  --  0AD930
D8 7E  D8 7A  D8 76  C1 2B  C1 0F  C1 0A  C0 F8  C0 E5  --  0AD940
C1 CF  C1 B4  C1 A7  C1 93  C1 80  C1 7B  C1 69  C1 57  --  0AD950
D8 8E  D8 8A  D8 86  D8 82  C2 1A  C1 F9  C1 F4  C1 E2  --  0AD960
C2 F7  C2 D4  C2 AD  C2 8A  C2 54  D8 9A  D8 96  D8 92  --  0AD970
D8 AE  D8 AA  D8 A6  D8 A2  D8 9E  C3 5F  C3 47  C3 23  --  0AD980
C4 6B  C4 4A  C4 40  C4 23  C4 00  C3 D3  C3 B5  C3 8B  --  0AD990
D8 C6  D8 C2  D8 BE  D8 BA  D8 B6  D8 B2  C4 98  C4 83  --  0AD9A0
C5 70  C5 54  C5 42  C5 30  C5 15  C4 E3  C4 C5  D8 CA  --  0AD9B0
C5 F6  C5 B5  C5 8C  D8 DE  D8 DA  D8 D6  D8 D2  D8 CE  --  0AD9C0
D9 00  D8 FC  D8 F8  D8 F2  D8 EC  D8 E8  D8 E2  C6 07  --  0AD9D0
C7 11  C6 C9  C6 AB  D9 18  D9 14  D9 10  D9 0C  C6 6D  --  0AD9E0
D9 34  D9 30  D9 2C  D9 28  D9 24  D9 20  D9 1C  C7 2F  --  0AD9F0
C7 93  C7 8E  D9 48  D9 44  D9 40  D9 3C  D9 38  01 FE  --  0ADA00
C8 C4  C8 93  C8 6C  C8 2F  C8 0C  C8 07  C7 ED  C7 D0  --  0ADA10
C9 3C  C9 2C  C9 27  C9 22  C9 0B  C9 06  C8 FE  C8 EB  --  0ADA20
CA 28  C9 D5  D9 50  D9 4C  C9 AC  C9 A4  C9 87  C9 7A  --  0ADA30
CA C5  CA AC  CA 92  D9 58  D9 54  CA 66  CA 61  CA 50  --  0ADA40
CB 78  CB 52  CB 22  D9 60  D9 5C  CA EA  CA E0  CA D8  --  0ADA50
CC 43  CC 14  CC 07  CB E4  CB D5  CB B6  CB AE  CB 9B  --  0ADA60
CD 01  CC E0  CC D6  CC BF  CC B8  CC A6  CC 82  CC 56  --  0ADA70
CD B8  CD A0  CD 8F  CD 80  CD 78  CD 5C  CD 39  D9 64  --  0ADA80
CE 96  CE 52  CE 4A  CE 23  CE 06  CD ED  CD DC  CD C0  --  0ADA90
CF 3E  CF 27  CF 07  CF 02  CE F8  CE D7  CE A5  CE A0  --  0ADAA0
CF D6  CF AF  CF 8B  CF 86  CF 81  D9 68  CF 53  CF 4B  --  0ADAB0
D0 96  D0 83  D0 6B  D0 66  D0 5E  D0 4B  D0 38  D0 07  --  0ADAC0
D1 3D  D1 20  D1 13  D0 F0  D0 D3  D0 C6  D0 AC  D0 A7  --  0ADAD0
D2 6C  D2 24  D2 1C  D1 ED  D1 E2  D1 DA  D1 7F  D9 6C  --  0ADAE0
D3 6D  D3 51  D3 49  D3 3F  D3 23  D3 11  D2 DB  D2 9F  --  0ADAF0
D4 52  D4 4A  D4 3C  D3 FB  D3 D2  D3 B5  D3 98  D3 7F  --  0ADB00
D9 74  D9 70  D5 10  D5 08  D4 FB  D4 E4  D4 C3  D4 AD  --  0ADB10
D6 0F  D5 FC  D5 D5  D5 94  D5 78  D5 5E  D9 7C  D9 78  --  0ADB20
D6 DD  D6 98  D6 90  D6 76  D6 6F  D6 5D  D6 3A  D6 14  --  0ADB30
00 0B  D8 07  D7 F3  D7 88  D7 5E  D7 40  D7 04  D6 FC  --  0ADB40
0F A6  0F A2  0F 9E  0F 9A  0F 96  0F 92  0F 8E  01 70  --  0ADB50
0F C6  0F C2  0F BE  0F BA  0F B6  0F B2  0F AE  0F AA  --  0ADB60
0F E6  0F E2  0F DE  0F DA  0F D6  0F D2  0F CE  0F CA  --  0ADB70
10 06  10 02  0F FE  0F FA  0F F6  0F F2  0F EE  0F EA  --  0ADB80
10 26  10 22  10 1E  10 1A  10 16  10 12  10 0E  10 0A  --  0ADB90
```

```
00 23  10 42  10 3E  10 3A  10 36  10 32  10 2E  10 2A  -- 0ADBA0
01 40  01 2F  01 05  00 F4  00 CE  00 BD  00 79  00 57  -- 0ADBB0
02 C2  02 B0  02 85  02 70  02 53  02 3C  01 DD  01 CE  -- 0ADBC0
03 F7  03 E5  03 5F  03 4D  03 23  03 07  02 F3  02 E1  -- 0ADBD0
04 94  04 84  04 63  04 50  04 40  04 26  04 12  04 05  -- 0ADBE0
05 5E  05 49  05 2F  05 15  04 F7  04 DD  04 CD  04 A5  -- 0ADBF0
06 63  06 37  06 20  06 04  05 F9  05 D5  05 C4  01 FE  -- 0ADC00
06 F3  06 EC  06 DB  06 C8  06 B6  06 A4  06 7D  06 72  -- 0ADC10
07 F4  07 9F  07 70  07 5A  07 32  07 2A  07 14  06 FD  -- 0ADC20
08 BC  08 AB  08 48  08 2E  08 20  08 11  08 0C  08 02  -- 0ADC30
09 59  09 42  09 12  10 52  10 4E  10 4A  10 46  08 E6  -- 0ADC40
10 5E  09 F3  10 5A  10 56  09 B8  09 97  09 87  09 70  -- 0ADC50

0A C1  0A A2  0A 51  0A 3A  10 6E  10 6A  10 66  10 62  -- 0ADC60
0B AD  0B 92  0B 89  0B 5C  0B 44  0B 3B  0A F1  0A D1  -- 0ADC70
0C E0  0C CE  0C 86  0C 70  0C 59  0C 3A  0C 1D  0B EA  -- 0ADC80
0D C9  0D C2  0D 93  0D 72  0D 17  10 7A  10 76  10 72  -- 0ADC90
0E A6  0E 7A  0E 6C  0E 54  0E 41  0E 31  0E 08  0D F9  -- 0ADCA0
0F 4A  0F 2A  0F 19  0F 0A  0E F1  0E E3  0E D4  0E B6  -- 0ADCB0
61 36  5A 21  59 AD  59 93  00 4C  00 0C  0F 82  0F 61  -- 0ADCC0
61 4A  61 46  5B 3B  5A EE  5A 8A  61 42  61 3E  61 3A  -- 0ADCD0
61 4E  5C A8  5C 95  5C 47  5C 10  5B B7  5B 9D  5B 69  -- 0ADCE0
5F 04  5E E8  5E CC  5E A0  5E 92  5E 73  5E 51  61 52  -- 0ADCF0
61 5E  61 5A  60 FC  61 56  60 D4  60 C3  5F 3E  5F 15  -- 0ADD00
61 AC  61 A8  61 A4  61 A0  04 E0  00 03  61 2B  61 18  -- 0ADD10
61 CC  61 C8  61 C4  61 C0  61 BC  61 B8  61 B4  61 B0  -- 0ADD20
61 EC  61 E8  61 E4  61 E0  61 DC  61 D8  61 D4  61 D0  -- 0ADD30
62 0C  62 08  62 04  62 00  61 FC  61 F8  61 F4  61 F0  -- 0ADD40
62 2C  62 28  62 24  62 20  62 1C  62 18  62 14  62 10  -- 0ADD50
62 4C  62 48  62 44  62 40  62 3C  62 38  62 34  62 30  -- 0ADD60
62 6C  62 68  62 64  62 60  62 5C  62 58  62 54  62 50  -- 0ADD70
00 09  62 88  62 84  62 80  62 7C  62 78  62 74  62 70  -- 0ADD80
02 04  01 FF  01 E6  01 C0  01 9F  00 64  00 5F  00 0E  -- 0ADD90
03 34  03 14  02 FD  02 B6  02 77  02 52  02 21  02 09  -- 0ADDA0
04 32  04 06  03 ED  03 CC  03 B3  03 92  03 79  03 4D  -- 0ADDB0
62 90  62 8C  04 A1  04 92  04 8A  04 71  04 53  04 4B  -- 0ADDC0
62 B0  62 AC  62 A8  62 A4  62 A0  62 9C  62 98  62 94  -- 0ADDD0
05 7E  04 C3  62 C8  62 C4  62 C0  62 BC  62 B8  62 B4  -- 0ADDE0
62 E8  62 E4  62 E0  62 DC  62 D8  62 D4  62 D0  62 CC  -- 0ADDF0
62 F0  62 EC  06 27  06 0E  05 D4  05 BB  05 A7  01 FE  -- 0ADE00
62 FC  62 F8  07 42  07 26  06 D2  06 9A  06 63  62 F4  -- 0ADE10
08 9B  08 29  07 CE  63 10  63 0C  63 08  63 04  63 00  -- 0ADE20
63 18  63 14  09 DE  09 C5  09 87  09 6E  09 33  08 E8  -- 0ADE30
63 38  63 34  63 30  63 2C  63 28  63 24  63 20  63 1C  -- 0ADE40
0A 84  0A 68  09 FA  63 4C  63 48  63 44  63 40  63 3C  -- 0ADE50
0C B7  0C AD  0C 5A  0B DE  0B 63  0A E8  0A D6  0A A9  -- 0ADE60
63 60  10 A9  0F C0  63 5C  63 58  63 54  63 50  0C C6  -- 0ADE70
18 72  18 42  17 E6  17 B4  17 61  17 59  15 FF  13 41  -- 0ADE80
63 68  19 D0  19 90  19 4C  19 03  18 D6  63 64  18 94  -- 0ADE90
1A ED  1A A7  1A 8E  1A 4F  1A 36  63 74  63 70  63 6C  -- 0ADEA0
1C B3  1C 51  1C 35  1B F6  1B DD  1B 5E  1B 45  1B 06  -- 0ADEB0
1E 2F  1E 00  1D E7  1D A8  1D 8F  1D 27  1D 0B  1C CC  -- 0ADEC0
1F B4  1F 85  1F 6C  1F 2D  1F 14  1E A0  1E 87  1E 48  -- 0ADED0
21 5A  21 13  20 F7  20 B8  20 9F  20 25  20 0C  1F CD  -- 0ADEE0
23 08  22 C1  22 A5  22 66  22 4D  21 CE  21 B2  21 73  -- 0ADEF0
24 7E  24 3F  24 26  63 7C  63 78  23 7C  23 60  23 21  -- 0ADF00
26 1A  25 DB  25 C2  25 55  25 39  24 FA  24 E1  24 9A  -- 0ADF10
27 A6  27 67  27 4E  26 F1  26 D5  26 96  26 7D  26 36  -- 0ADF20
29 42  29 03  28 EA  28 7D  28 61  28 22  28 09  27 C2  -- 0ADF30
2B 1D  2A DE  2A C5  2A 19  29 FD  29 BE  29 A5  29 5E  -- 0ADF40
```

764

```
2C 93 2C 54 2C 3B 2B F4 2B D8 2B 99 2B 80 2B 39 -- 0ADF50
2E 4F 2E 10 2D F7 2D 9A 2D 7E 2D 3F 2D 26 2C AF -- 0ADF60
2F C5 2F 86 2F 6D 2F 26 2F 0A 2E CB 2E B2 2E 6B -- 0ADF70
63 88 63 84 63 80 30 CC 30 B0 30 71 30 58 2F E1 -- 0ADF80
32 68 32 29 32 10 31 C3 31 A7 31 68 31 4F 63 8C -- 0ADF90
34 22 33 E3 33 CA 33 7D 33 61 33 22 33 09 32 84 -- 0ADFA0
63 A8 63 A4 63 A0 63 9C 63 98 63 94 63 90 34 3E -- 0ADFB0
63 C8 63 C4 63 C0 63 BC 63 B8 63 B4 63 B0 63 AC -- 0ADFC0
35 76 34 EB 34 75 63 DC 63 D8 63 D4 63 D0 63 CC -- 0ADFD0
36 A0 36 82 36 41 36 15 35 FE 35 DA 35 B8 35 B0 -- 0ADFE0
37 55 37 3E 37 36 37 24 37 12 36 FE 36 DC 36 BE -- 0ADFF0

63 E4 63 E0 37 90 37 81 37 6E 37 5F 37 5A 01 FE -- 0AE000
38 63 38 52 38 36 38 25 38 0C 38 07 37 F3 63 E8 -- 0AE010
38 C9 38 C4 38 B5 38 B0 38 AB 38 99 38 89 38 81 -- 0AE020
39 55 39 30 39 1E 39 0F 39 0A 38 EE 38 D3 38 CE -- 0AE030
3A C3 3A 75 3A 6D 3A 46 39 F8 39 F0 39 9E 39 66 -- 0AE040
3B EF 3B 72 3B 45 3B 2F 3B 07 3B 02 3A E2 3A D1 -- 0AE050
3D 52 3D 4B 3D 26 3D 00 3C A9 3C 34 3C 2F 3C 27 -- 0AE060
63 F0 63 EC 3D FC 3D D7 3D B2 3D 86 3D 60 3D 59 -- 0AE070
3F 6E 3E F9 3E F4 3E DC 64 00 63 FC 63 F8 63 F4 -- 0AE080
40 5D 40 15 40 00 3F D4 3F BF 3F 94 3F 8F 3F 83 -- 0AE090
41 F6 64 04 41 CE 41 A1 41 34 40 D0 40 B8 40 99 -- 0AE0A0
42 BE 42 9E 42 8D 42 79 42 68 42 33 42 22 42 07 -- 0AE0B0
43 8C 43 73 43 62 43 3A 43 29 42 FC 42 EB 42 CF -- 0AE0C0
64 08 44 1E 44 0D 43 F1 43 E0 43 C7 43 B6 43 9D -- 0AE0D0
46 5A 46 32 46 0E 45 C4 44 38 44 30 64 10 64 0C -- 0AE0E0
47 75 47 51 47 2D 47 0A 46 E6 46 C3 46 A0 46 7D -- 0AE0F0
49 BE 49 9B 49 78 49 55 49 32 49 0A 48 E6 47 99 -- 0AE100
4F C5 4F AE 4A 82 4A 71 4A 4D 4A 29 4A 05 49 E2 -- 0AE110
64 18 64 14 50 3D 50 2D 50 15 50 05 4F F5 4F DD -- 0AE120
53 95 53 8B 53 7A 53 69 53 1B 52 DA 50 D4 64 1C -- 0AE130
64 2C 64 28 54 C2 64 24 54 AB 54 88 54 1C 64 20 -- 0AE140
55 6E 55 69 55 61 55 3C 55 0C 54 E1 64 34 64 30 -- 0AE150
56 D1 56 C4 56 A0 56 91 56 5B 55 B3 55 9A 55 8D -- 0AE160
58 11 58 0A 57 F2 57 EB 57 CD 57 9F 56 ED 56 E5 -- 0AE170
64 44 64 40 58 DF 58 CF 64 3C 64 38 58 30 58 29 -- 0AE180
59 D8 59 B2 59 9B 59 8D 64 50 64 4C 64 48 59 66 -- 0AE190
5B 3F 5B 27 5B 1F 5A ED 64 5E 64 5A 64 56 59 FE -- 0AE1A0
5D 4F 5D 3A 5C 75 5C 70 5C 64 5C 4F 5B 50 5B 4B -- 0AE1B0
64 66 64 62 5E A1 5E 8C 5E 64 5E 1C 5D 9E 5D 89 -- 0AE1C0
5F A8 5F 91 5F 7E 5F 6B 5F 54 5F 41 64 6E 64 6A -- 0AE1D0
60 95 60 82 60 7D 60 68 60 2D 60 13 5F FD 5F E3 -- 0AE1E0
00 24 00 0C 61 95 61 7D 61 66 61 1F 60 E0 60 BB -- 0AE1F0
EC A6 EC A2 EC 9E EC 9A EC 96 EC 92 EC 8E 01 FE -- 0AE200
EC AA EA 36 EA 1C E9 EE E9 93 E9 4F E9 21 E8 C6 -- 0AE210
E6 B2 A0 49 E6 AE 03 FE 00 04 EC 82 EC 6E EA 6A -- 0AE220
E6 CE E6 CA E6 C6 E6 C2 E6 BE E6 BA E6 B6 A0 6C -- 0AE230
E6 EE E6 EA E6 E6 E6 E2 E6 DE E6 DA E6 D6 E6 D2 -- 0AE240
E7 0E E7 0A E7 06 E7 02 E6 FE E6 FA E6 F6 E6 F2 -- 0AE250
E7 2E E7 2A E7 26 E7 22 E7 1E E7 1A E7 16 E7 12 -- 0AE260
E7 4E E7 4A E7 46 E7 42 E7 3E E7 3A E7 36 E7 32 -- 0AE270
A0 A9 A0 98 A0 87 E7 62 E7 5E E7 5A E7 56 E7 52 -- 0AE280
A2 20 A2 10 A1 FF A1 C5 A1 B4 A1 54 A1 43 A1 2A -- 0AE290
A2 FE A2 E1 A2 D1 A2 C6 A2 AD A2 7A A2 6B A2 39 -- 0AE2A0
A5 58 A5 47 A5 01 A4 60 A4 4F A4 09 A3 14 A3 06 -- 0AE2B0
A8 99 A8 94 E7 A4 E7 A0 E7 9C A6 44 A6 13 A6 02 -- 0AE2C0
AA 15 A9 FA A9 DF A9 50 A9 19 A9 14 A8 D9 A8 D4 -- 0AE2D0
E7 B8 E7 B4 E7 B0 E7 AC E7 A8 AD 6A AC E7 AA 3D -- 0AE2E0
AE 53 AE 41 AE 23 E7 BC AE 09 AD E3 AD D1 AD A3 -- 0AE2F0
```

765

```
AF 28 E7 CO AF 09 AE E3 AE D1 AE B9 AE 93 AE 79 -- 0AE300
BO 36 BO 19 BO 08 AF EF E7 CC E7 C8 E7 C4 AF 3D -- 0AE310
E7 DC E7 D8 E7 D4 E7 DO BO 86 BO 78 BO 6B BO 43 -- 0AE320
BO AB BO 9E E7 F4 E7 FO E7 EC E7 E8 E7 E4 E7 EO -- 0AE330
B1 CO B1 9E B1 6B B1 39 B1 07 BO EE BO EO BO D3 -- 0AE340
B3 AC B3 9B B3 7F B3 6E B3 0E B2 DF B2 D7 B1 CF -- 0AE350
B5 44 B5 26 B5 15 B4 58 B4 47 B4 20 B3 E7 B3 D6 -- 0AE360
E7 F8 B5 DB B5 D4 B5 B7 B5 A6 B5 90 B5 7F B5 55 -- 0AE370
B6 CA B6 B9 B6 6C B6 5B E8 08 E8 04 E8 00 E7 FC -- 0AE380
B8 DC B8 5C B8 1A B8 09 B7 B1 B7 AO B7 41 B7 2D -- 0AE390

BA 87 BA 76 BA 1E BA OD B9 AE B9 9A B9 37 B9 26 -- 0AE3A0
BB FC BB CD BB 8B BB 49 BB 08 E8 10 E8 OC BA C9 -- 0AE3B0
BD CB BD BA BD 83 E8 14 BC 81 BC 45 BC 17 BC OD -- 0AE3C0
CO FE BF 27 BF 07 BE C4 BE 9A BE 89 BE 34 BE 23 -- 0AE3D0
C4 33 C2 72 C2 61 C2 12 C1 F9 C1 E8 C1 60 C1 43 -- 0AE3E0
C4 F2 C4 E3 C4 DE C4 D6 E8 18 C4 9F C4 6B C4 48 -- 0AE3F0
C5 37 E8 1C C5 0B C5 06 C5 01 C4 FC C4 F7 01 FE -- 0AE400
E8 28 E8 24 E8 20 C5 AC C5 A7 C5 96 C5 6A C5 59 -- 0AE410
E8 48 E8 44 E8 40 E8 3C E8 38 E8 34 E8 30 E8 2C -- 0AE420
C6 0A C5 E3 C5 D2 E8 5C E8 58 E8 54 E8 50 E8 4C -- 0AE430
C6 D6 C6 BF C6 98 C6 90 C6 5E C6 59 C6 51 C6 26 -- 0AE440
C7 DD C7 BF C7 97 C7 85 C7 70 C7 31 C7 2A C6 DE -- 0AE450
C8 87 C8 80 C8 6E C8 61 C8 53 C8 44 C8 22 C8 04 -- 0AE460
E8 6C E8 68 E8 64 E8 60 E8 D8 C8 D3 C8 CB C8 A7 -- 0AE470
E8 8C E8 88 E8 84 E8 80 E8 7C E8 78 E8 74 E8 70 -- 0AE480
E8 AC E8 A8 E8 A4 E8 AO E8 9C E8 98 E8 94 E8 90 -- 0AE490
E8 CC E8 C8 E8 C4 E8 CO E8 BC E8 B8 E8 B4 E8 BO -- 0AE4A0
C9 B8 C9 99 C9 7A C9 5B C9 3C C9 1D C8 FE E8 DO -- 0AE4B0
CB 8C CB 6C CB 4D CA 58 CA 38 CA 18 C9 F8 C9 D8 -- 0AE4C0
E8 E4 E8 EO E8 DC E8 D8 E8 D4 CB EC CB CC CB AC -- 0AE4D0
CC 7A CC 56 CC 41 E8 F8 E8 F4 E8 FO E8 EC E8 E8 -- 0AE4E0
CE 19 CE 02 CD C1 CD 8B CD 74 CD 56 CD 38 CD 24 -- 0AE4F0
DO 38 DO 26 CF FO CF DF CF CB CF 94 CF 84 CE 44 -- 0AE500
D1 44 D1 2A D1 10 DO F2 DO DB DO 9E DO 85 DO 71 -- 0AE510
D3 90 D3 54 D2 F4 D2 AB D2 6C D1 99 D1 82 D1 62 -- 0AE520
D5 EC D5 CE D5 BC D5 8F D5 53 D4 F3 D4 B2 D4 7B -- 0AE530
D8 29 D8 21 D7 F7 D7 E6 D7 CD E9 08 D7 89 E8 FC -- 0AE540
D8 EB D8 E3 D8 C7 D8 9B D8 8A D8 66 D8 55 E9 OC -- 0AE550
D9 AB E9 20 E9 1C E9 18 E9 14 D9 20 E9 10 D8 FO -- 0AE560
DA 84 DA 69 DA 61 DA 3F DA 27 DA OC D9 ED D9 C4 -- 0AE570
DB 6E DB 61 DB 2C DB 10 DA E1 DA C5 DA AE DA 92 -- 0AE580
DF 13 DE FD DD 47 DC BO DC 9B DB D9 DB 91 DB 83 -- 0AE590
EO 05 DF E8 DF D7 DF AF DF 9E DF 62 DF 51 DF 24 -- 0AE5A0
EO A9 EO 98 E9 24 EO 64 EO 53 EO 37 EO 29 EO 16 -- 0AE5B0
E1 33 E1 2E E1 26 E1 16 E1 03 E9 28 EO F2 EO DC -- 0AE5C0
E1 F6 E1 E2 E1 D1 E1 B5 E1 A4 E1 7B E1 73 E1 4F -- 0AE5D0
E2 C6 E2 93 E2 6E E2 60 E2 55 E2 3D E2 2C E2 07 -- 0AE5E0
E9 2C E3 48 E3 31 E3 20 E2 F7 E2 FO E2 E9 E2 D7 -- 0AE5F0
E9 3C E9 38 E4 7A E4 4B E9 34 E3 80 E9 30 01 FE -- 0AE600
E5 66 E5 58 E5 3C E4 C4 E4 B3 E4 95 E4 8C E9 40 -- 0AE610
03 44 00 06 E6 95 E6 4F E6 40 E6 25 E5 9D E5 87 -- 0AE620
6B EE 6B EA 6B E6 6B E2 6B DE 6B DA 6B D6 6B D2 -- 0AE630
6C 0E 6C 0A 6C 06 6C 02 6B FE 6B FA 6B F6 6B F2 -- 0AE640
6C 2E 6C 2A 6C 26 6C 22 6C 1E 6C 1A 6C 16 6C 12 -- 0AE650
6C 4E 6C 4A 6C 46 6C 42 6C 3E 6C 3A 6C 36 6C 32 -- 0AE660
6C 6E 6C 6A 6C 66 6C 62 6C 5E 6C 5A 6C 56 6C 52 -- 0AE670
6C 8E 6C 8A 6C 86 6C 82 6C 7E 6C 7A 6C 76 6C 72 -- 0AE680
39 32 39 21 39 08 38 AA 6C 9E 6C 9A 6C 96 6C 92 -- 0AE690
3B 86 3B 75 3A 2A 3A 13 39 FC 39 E5 39 A6 39 95 -- 0AE6A0
```

```
3D B6 3D 15 3D 10 3D 08 3C 97 3C 76 3C 49 3C 3A -- 0AE6B0
6C AE 6C AA 6C A6 3E 4B 3E 36 6C A2 3E 13 3D FF -- 0AE6C0
3F 8D 3F 86 3F 79 3F 51 3F 44 3F 27 3F 16 3E FD -- 0AE6D0
3F DA 3F B2 3F A5 6C C2 6C BE 6C BA 6C B6 6C B2 -- 0AE6E0
41 BC 40 C0 40 9E 40 6B 40 39 40 07 3F EE 3F E7 -- 0AE6F0
42 C0 42 70 42 5F 42 26 42 15 41 EB 41 DA 41 C4 -- 0AE700
6C CE 6C CA 6C C6 43 50 43 3F 43 21 43 10 42 D1 -- 0AE710
44 65 44 54 44 3E 44 2D 44 17 44 06 43 C3 43 B2 -- 0AE720
45 A7 45 44 45 33 44 E9 6C DE 6C DA 6C D6 6C D2 -- 0AE730

47 57 46 FB 46 EA 46 87 46 76 46 21 46 10 45 BB -- 0AE740
49 3D 49 2C 48 D7 48 C3 48 60 48 4F 48 05 47 68 -- 0AE750
4A FF 4A EA 4A 84 4A 73 4A 17 4A 06 49 A3 49 92 -- 0AE760
4B A2 4B 9D 4B 98 4B 93 4B 89 4B 78 6C E2 4B 33 -- 0AE770
4C 39 4C 0D 4B FC 4B E3 4B C6 6C E6 4B AC 4B A7 -- 0AE780
6C F2 4C B7 4C 99 4C 8B 4C 6F 6C EE 6C EA 4C 4A -- 0AE790
6D 12 6D 0E 6D 0A 6D 06 6D 02 6C FE 6C FA 6C F6 -- 0AE7A0
6D 32 6D 2E 6D 2A 6D 26 6D 22 6D 1E 6D 1A 6D 16 -- 0AE7B0
4C CC 6D 56 6D 52 6D 46 6D 42 6D 3E 6D 3A 6D 36 -- 0AE7C0
4D F9 4D A2 4D 8E 4D 70 4D 52 4D 43 4C F0 4C E8 -- 0AE7D0
4F E9 4F D5 4F 04 4E F4 4E 9A 4E 70 4E 35 4E 17 -- 0AE7E0
50 DC 50 A1 50 88 50 74 50 43 50 31 50 20 50 0C -- 0AE7F0
51 94 51 80 51 60 51 42 51 28 51 0E 50 F0 01 FE -- 0AE800
54 4A 54 14 53 F4 53 1B 52 FB 52 B4 52 76 52 56 -- 0AE810
55 4A 55 23 55 12 54 FD 54 E9 54 D7 54 A9 54 89 -- 0AE820
56 8A 56 75 56 61 56 4A 56 38 55 F6 55 D8 55 68 -- 0AE830
57 79 57 69 57 4C 57 31 57 13 56 F2 56 DE 56 C0 -- 0AE840
58 C9 58 B5 58 84 58 73 58 5F 58 3C 58 28 57 8C -- 0AE850
59 AF 59 91 59 77 59 5D 59 4F 59 31 59 1D 58 E2 -- 0AE860
5B 50 5B 00 5A EE 5A DC 5A BA 5A 2D 59 E3 59 CF -- 0AE870
5C 33 5C 0C 5B EE 5B C3 5B AE 5B 9B 5B 6F 5B 64 -- 0AE880
5C BF 5C BA 5C B3 5C A1 5C 93 5C 83 5C 73 5C 51 -- 0AE890
6D 6A 6D 66 6D 62 6D 5E 5E 81 6D 5A 5C DF 5C C4 -- 0AE8A0
5F 7F 5F 6E 5F 40 5F 2F 5E EF 5E DE 5E C5 6D 6E -- 0AE8B0
60 AD 60 89 60 78 6D 72 60 47 60 36 60 18 60 07 -- 0AE8C0
6D 7E 6D 7A 61 32 61 28 61 17 6D 76 60 EA 60 BE -- 0AE8D0
62 CC 62 9E 62 83 62 5A 61 62 6D 8A 6D 86 6D 82 -- 0AE8E0
63 A9 63 73 63 57 63 43 63 27 63 0E 62 F3 62 DD -- 0AE8F0
65 3E 65 29 65 13 64 EF 64 B6 64 80 64 48 63 BA -- 0AE900
67 AC 67 9B 67 85 66 4C 65 B2 65 A0 65 6E 65 59 -- 0AE910
68 8D 68 7C 68 5C 68 4B 68 31 68 20 67 E7 67 D6 -- 0AE920
69 50 69 3F 69 18 69 07 68 D8 68 C7 68 AB 68 9D -- 0AE930
6A 23 6A 1B 69 EF 69 D7 69 CF 69 A2 69 8E 69 7D -- 0AE940
6A DE 6A BB 6A AA 6A 8E 6A 7B 6A 73 6A 62 6A 50 -- 0AE950
6B 8F 6B 77 6B 66 6B 41 6B 30 6B 1C 6B 0B 6A EF -- 0AE960
B2 96 B2 92 B2 8E 03 64 00 07 6B C6 6B A1 6B 9A -- 0AE970
B2 B6 B2 B2 B2 AE B2 AA B2 A6 B2 A2 B2 9E B2 9A -- 0AE980
B2 D6 B2 D2 B2 CE B2 CA B2 C6 B2 C2 B2 BE B2 BA -- 0AE990
B2 F6 B2 F2 B2 EE B2 EA B2 E6 B2 E2 B2 DE B2 DA -- 0AE9A0
B3 16 B3 12 B3 0E B3 0A B3 06 B3 02 B2 FE B2 FA -- 0AE9B0
B3 36 B3 32 B3 2E B3 2A B3 26 B3 22 B3 1E B3 1A -- 0AE9C0
8C 1F 8C 01 8B 50 8B 3C 8A EA 8A A5 B3 3E B3 3A -- 0AE9D0
8D 50 8D 3E 8D 2C 8D 14 8C 8F 8C 80 8C 56 8C 3D -- 0AE9E0
8D D4 8D C3 8D AE 8D 97 8D 8D 8D 86 8D 75 8D 62 -- 0AE9F0
8E 51 8E 35 8E 17 8D FC 8D EA 8D E2 8D D9 01 FE -- 0AEA00
8F 5F 8F 48 8F 30 8F 17 8F 08 8E E0 8E D1 8E 8E -- 0AEA10
B3 56 B3 52 B3 4E B3 4A B3 46 B3 42 8F 84 8F 66 -- 0AEA20
91 1C 90 73 90 49 90 2E 90 0F 8F E0 8F B1 B3 5A -- 0AEA30
92 33 92 06 91 F9 91 DC 91 C3 91 7F 91 55 91 45 -- 0AEA40
92 E7 92 D3 92 B6 92 9C 92 82 92 72 92 59 92 45 -- 0AEA50
```

767

```
93 F4 93 C8 93 B4 93 A0 93 7E B3 62 B3 5E 93 4D -- 0AEA60
B3 76 B3 72 B3 6E B3 6A B3 66 94 90 94 32 94 0C -- 0AEA70
95 BB 95 AE 95 A1 95 94 95 87 95 27 94 BC B3 7A -- 0AEA80
B3 92 B3 8E B3 8A B3 86 B3 82 B3 7E 95 CD 95 C8 -- 0AEA90
B3 B2 B3 AE B3 AA B3 A6 B3 A2 B3 9E B3 9A B3 96 -- 0AEAA0
96 A2 96 9A 96 7C B3 C6 B3 C2 B3 BE B3 BA B3 B6 -- 0AEAB0
97 48 97 21 97 03 96 F3 96 E0 96 C9 96 B1 96 A7 -- 0AEAC0
98 2D 98 28 98 13 97 D8 97 BC 97 A8 97 86 97 66 -- 0AEAD0

99 49 99 28 98 FF 98 F2 98 A7 98 74 98 51 98 41 -- 0AEAE0
99 CB 99 C6 99 BE 99 A0 B3 D2 B3 CE B3 CA 99 6A -- 0AEAF0
9A E3 9A C1 9A A1 9A 86 9A 7F 9A 50 99 F8 99 D6 -- 0AEB00
9B D6 9B C1 9B BC 9B AA 9B 8E 9B 49 9B 13 9A F7 -- 0AEB10
B3 DA B3 D6 9C 79 9C 6B 9C 57 9C 31 9B FE 9B E3 -- 0AEB20
9D 1A 9C FA 9C C9 9C A3 B3 EA B3 E6 B3 E2 B3 DE -- 0AEB30
9E 43 9E 2B 9E 21 9D FA 9D C4 9D A4 9D 79 9D 52 -- 0AEB40
9E B2 9E 8F 9E 8A 9E 81 9E 7C 9E 77 9E 6F 9E 4B -- 0AEB50
9F F2 9F 8B 9F 43 9F 1B 9F 0E 9F 04 9E E9 9E CC -- 0AEB60
A0 DB A0 D6 A0 C0 A0 96 B3 EE A0 6A A0 3D A0 1E -- 0AEB70
A1 2B A1 21 A1 1C A1 13 A1 0B A0 FB A0 F6 A0 EE -- 0AEB80
A2 B6 A2 95 A2 4C A2 21 A1 E8 A1 99 A1 6B A1 4A -- 0AEB90
A3 F8 A3 EF A3 E6 A3 DD A3 97 A3 6C A3 33 A2 E4 -- 0AEBA0
A4 3C A4 2C B3 FA B3 F6 B3 F2 A4 0F A4 0A A4 01 -- 0AEBB0
A5 26 A5 21 A5 14 A5 04 A4 E9 A4 97 A4 4E A4 49 -- 0AEBC0
A5 94 A5 8F A5 82 A5 75 A5 68 A5 5B A5 4E A5 3E -- 0AEBD0
A6 11 A5 E1 A5 CC A5 C7 A5 BE A5 B9 A5 B4 A5 AC -- 0AEBE0
A6 CA A6 86 A6 7F A6 68 A6 50 A6 40 A6 2F A6 28 -- 0AEBF0
A7 AA A7 9B A7 63 A7 54 A7 2B A6 EE A6 D3 01 FE -- 0AEC00
B4 0A B4 06 B4 02 B3 FE A7 FC A7 ED A7 C8 A7 BB -- 0AEC10
A9 5B A9 37 A9 07 A8 B8 A8 AB A8 8D A8 42 A8 2B -- 0AEC20
AA 57 AA 4F AA 40 AA 1D AA 18 AA 13 A9 99 A9 85 -- 0AEC30
AB 59 AB 38 AB 2E AB 29 AB 21 AB 06 AA F2 AA 87 -- 0AEC40
AB A2 AB 8F B4 22 B4 1E B4 1A B4 16 B4 12 B4 0E -- 0AEC50
AB E3 AB D8 AB D3 AB CE AB C5 AB C0 AB BB AB B3 -- 0AEC60
AC 8D AC 80 AC 73 AC 59 AC 4C AC 30 AC 14 AB FC -- 0AEC70
AC EB AC E3 AC DB AC CE AC C1 AC B9 AC A7 AC 9A -- 0AEC80
AD 3E AD 24 AD 1F AD 16 AD 11 AD 0C AD 04 AC F0 -- 0AEC90
AF 72 AE 3C AE 05 AD C6 AD A6 AD 8C AD 72 AD 58 -- 0AECA0
B0 6D B0 5F B0 33 B0 1A B0 0C AF F5 AF DC AF BE -- 0AECB0
B1 73 B1 5B B1 40 B0 F3 B4 26 B0 BC B0 A7 B0 86 -- 0AECC0
B2 62 B2 42 B2 1B B2 01 B1 D5 B1 BD B1 A5 B1 8D -- 0AECD0
07 40 07 3C 07 38 07 34 07 30 00 72 00 0D B2 7A -- 0AECE0
07 50 07 4C 07 48 07 44 04 58 04 51 04 21 04 08 -- 0AECF0
07 70 07 6C 07 68 07 64 07 60 07 5C 07 58 07 54 -- 0AED00
07 90 07 8C 07 88 07 84 07 80 07 7C 07 78 07 74 -- 0AED10
05 8E 05 64 05 3A 04 ED 04 B4 04 94 07 98 07 94 -- 0AED20
06 2B 06 23 06 1E 06 11 06 09 06 04 05 F4 05 D4 -- 0AED30
06 9F 06 97 06 92 06 85 06 7D 06 78 06 68 06 48 -- 0AED40
D1 1E D1 1A 02 CC 00 06 07 1C 06 F0 06 E1 06 BC -- 0AED50
D1 3E D1 3A D1 36 D1 32 D1 2E D1 2A D1 26 D1 22 -- 0AED60
D1 5E D1 5A D1 56 D1 52 D1 4E D1 4A D1 46 D1 42 -- 0AED70
D1 7E D1 7A D1 76 D1 72 D1 6E D1 6A D1 66 D1 62 -- 0AED80
D1 9E D1 9A D1 96 D1 92 D1 8E D1 8A D1 86 D1 82 -- 0AED90
D1 C6 D1 C2 D1 BE D1 BA D1 B6 D1 B2 D1 A6 D1 A2 -- 0AEDA0
D1 E6 D1 E2 D1 DE D1 DA D1 D6 D1 D2 D1 CE D1 CA -- 0AEDB0
A3 41 A3 3A A3 02 A2 BE A2 B6 A2 93 D1 EE D1 EA -- 0AEDC0
A5 02 A4 E7 A4 B8 A4 05 A3 EA A3 9C A3 88 A3 5D -- 0AEDD0
A7 3C A7 2B A6 FA A6 E0 A6 7F A6 7A A5 F6 A5 23 -- 0AEDE0
D2 00 D1 FC D1 F8 D1 F4 A8 25 A8 11 A7 9A A7 93 -- 0AEDF0
A9 E6 A9 BF D2 16 D2 12 D2 0E D2 0A D2 06 01 FE -- 0AEE00
```

```
D2 26 D2 22 D2 1E D2 1A AA 4B AA 46 AA 1F A9 EB -- 0AEE10
AB F1 AB CA AB A3 AB 50 AB 08 AA F0 AA D8 AA CB -- 0AEE20
D2 32 AC 94 AC 85 AC 6F AC 4D D2 2E D2 2A AC 09 -- 0AEE30
AE 19 AD FB AD D9 AD AA AD 1A AC E9 AC D7 D2 36 -- 0AEE40
D2 4A D2 46 D2 42 D2 3E D2 3A AE 94 AE 64 AE 3A -- 0AEE50
AE AB D2 66 D2 62 D2 5E D2 5A D2 56 D2 52 D2 4E -- 0AEE60
AF F6 AF C6 AF 98 AF 93 AF 6F AF 5E AE CE AE B0 -- 0AEE70

B0 A1 B0 9C B0 97 B0 92 B0 84 B0 6B B0 59 B0 3C -- 0AEE80
D2 7E D2 7A D2 76 B1 08 B0 EB D2 72 D2 6E D2 6A -- 0AEE90
B1 FC B1 E8 B1 A9 B1 81 B1 75 B1 63 D2 86 B2 01 -- 0AEEA0
B2 C6 B2 95 B2 52 B2 45 B2 1B B2 16 B2 06 B3 05 -- 0AEEB0
B4 CB B4 AF B4 98 B4 1C B3 F8 B3 D7 B3 B6 B4 D6 -- 0AEEC0
B6 23 B6 1E B6 13 B5 FB B5 E9 B5 D1 B4 DB B4 D6 -- 0AEED0
B8 3B B8 13 B7 EA B7 53 B7 30 B7 0D B6 89 D2 CA -- 0AEEE0
B9 79 B9 2E B8 FC B8 CF B8 87 B8 6F B8 57 B8 4A -- 0AEEF0
BB 87 BB 45 BB 1D BA D1 BA AA BA 84 BA 5A B9 AC -- 0AEF00
BC 4C D2 D6 D2 D2 D2 CE BC 1A BC 07 BB D0 BB B2 -- 0AEF10
BE 9F BE 83 BE 72 BE 34 BE 23 BD 32 BC 79 BC 5D -- 0AEF20
C1 C8 C1 B5 C1 A2 C1 8F C1 7C D2 EA C0 BC BF AB -- 0AEF30
C2 60 C2 4D C2 3A C2 27 C2 14 C2 01 C1 EE C1 DB -- 0AEF40
C2 F8 C2 E5 C2 D2 C2 BF C2 AC C2 99 C2 86 C2 73 -- 0AEF50
C3 90 C3 7D C3 6A C3 57 C3 44 C3 31 C3 1E C3 0B -- 0AEF60
C4 72 C4 5A C4 48 C4 30 D2 EE C3 C9 C3 B6 C3 A3 -- 0AEF70
C5 2A C5 25 C5 0D C4 FB C4 E3 D2 F2 C4 7C C4 77 -- 0AEF80
C6 49 C5 E2 C5 DD C5 D8 C5 C0 C5 AE C5 96 C5 2F -- 0AEF90
C7 26 C7 14 C6 FC C6 95 C6 90 C6 8B C6 73 C6 61 -- 0AEFA0
C7 F6 C7 F1 C7 D9 C7 C7 C7 AF C7 48 C7 43 C7 3E -- 0AEFB0
C9 0B C8 A9 C8 A4 C8 9F C8 87 C8 75 C8 5D C7 FB -- 0AEFC0
C9 C3 C9 A7 C9 96 C9 57 C9 52 C9 4D C9 35 C9 23 -- 0AEFD0
CB DC CB CA CB AA CB 8A CB 68 CB 4C CB 3B CA E5 -- 0AEFE0
D2 F6 CC 8B CC 7D CC 5C CC 4E CC 2E CC 1B CB FD -- 0AEFF0
CF 60 CF 59 D3 12 D3 0E CC C5 CC BD D2 FA 01 FE -- 0AF000
D0 16 D0 11 D0 04 CF FF CF F2 CF ED CF E0 CF DB -- 0AF010
01 C6 00 09 D1 0B D0 E4 D0 BF D0 B0 D0 8E D0 3A -- 0AF020
45 9E 45 74 45 70 45 6C 45 68 45 64 45 60 45 5C -- 0AF030
25 EE 25 D6 25 BD 25 9A 25 81 25 5A 45 A6 45 A2 -- 0AF040
27 97 27 86 27 60 27 4F 27 08 26 6E 26 40 26 10 -- 0AF050
2A CD 2A 85 29 6B 29 66 28 B8 28 B3 28 2A 28 25 -- 0AF060
2C D8 2C C1 2C 89 2C 3F 2B F5 2B AB 2B 61 2B 17 -- 0AF070
45 B6 45 B2 45 AE 45 AA 2D 17 2D 12 2D 04 2C F2 -- 0AF080
2D 98 2D 7E 2D 65 2D 53 2D 40 45 C2 45 BE 45 BA -- 0AF090
2F 4F 2F 22 2F 1D 2E FC 2E D1 2E CC 2E 73 2D DC -- 0AF0A0
30 1D 30 18 2F F7 2F C9 2F C4 2F A3 2F 75 2F 70 -- 0AF0B0
31 1A 30 F3 30 C5 30 C0 30 9F 30 71 30 6C 30 4B -- 0AF0C0
31 F9 31 E5 31 C4 31 A8 31 94 31 73 31 4D 31 1F -- 0AF0D0
32 F4 32 E6 32 CF 32 B6 32 96 32 7D 32 58 32 44 -- 0AF0E0
34 0C 33 DC 33 D5 33 A6 33 85 33 2A 45 CA 45 C6 -- 0AF0F0
45 DE 45 DA 45 D6 45 D2 45 CE 34 6D 34 49 34 35 -- 0AF100
36 2A 36 0F 35 A9 35 75 34 E6 34 C1 34 A1 45 E2 -- 0AF110
45 E6 36 FF 36 DB 36 C7 36 A5 36 82 36 5E 36 45 -- 0AF120
46 06 46 02 45 FE 45 FA 45 F6 45 F2 45 EE 45 EA -- 0AF130
46 26 46 22 46 1E 46 1A 46 16 46 12 46 0E 46 0A -- 0AF140
46 46 46 42 46 3E 46 3A 46 36 46 32 46 2E 46 2A -- 0AF150
37 53 37 3F 46 5E 46 5A 46 56 46 52 46 4E 46 4A -- 0AF160
38 65 38 29 38 0F 37 F5 37 EE 37 DA 37 C8 37 95 -- 0AF170
39 33 39 15 38 ED 38 DE 38 C3 38 B3 38 AC 38 8F -- 0AF180
39 D1 39 BC 39 AD 39 9A 39 92 39 60 39 5B 39 4D -- 0AF190
3A E8 3A C1 3A AF 3A 6A 3A 4E 3A 3A 3A 12 39 F8 -- 0AF1A0
3C 4A 3B E1 3B D0 3B 89 3B 6B 3B 63 3B 4C 3B 33 -- 0AF1B0
```

```
46 6E  46 6A  46 66  46 62  3C D6  3C AB  3C A6  3C 8D  --  0AF1C0
41 75  41 4F  41 29  41 17  46 72  3D 42  3D 20  3D 02  --  0AF1D0
46 86  46 82  46 7E  46 7A  42 7D  42 6E  41 C1  41 9B  --  0AF1E0
F4 F3  F8 B0  F8 AC  00 12  00 0C  43 8B  43 78  43 28  --  0AF1F0
00 07  F6 E9  F6 E4  F6 7F  F6 7A  F5 41  F5 17  01 FE  --  0AF200
2D 72  2D 6E  2D 6A  2D 66  2D 62  2D 5E  2D 5A  01 26  --  0AF210

2D 92  2D 8E  2D 8A  2D 86  2D 82  2D 7E  2D 7A  2D 76  --  0AF220
2E 02  2D C6  2D C2  2D B6  2D AA  2D 9E  2D 9A  2D 96  --  0AF230
2E 22  2E 1E  2E 1A  03 14  02 94  2E 0E  2E 0A  2E 06  --  0AF240
04 FC  03 DF  03 CB  03 88  03 83  03 44  2E 32  2E 26  --  0AF250
08 32  07 F6  07 BC  07 80  06 E9  06 CE  05 49  05 10  --  0AF260
0B BD  0B 26  0A EC  0A A0  0A 0B  09 CE  09 20  08 E3  --  0AF270
0E 95  0E 58  0E 0C  0D 6C  0D 2F  0C E3  0C 43  0C 09  --  0AF280
10 90  0F FF  0F C6  0F B2  2E 46  0F 5B  0F 45  0E FA  --  0AF290
13 1A  12 E0  12 A4  12 0D  11 F2  11 57  11 1A  10 CD  --  0AF2A0
16 0D  15 CF  15 A5  14 D9  14 9C  14 19  13 DC  13 56  --  0AF2B0
18 FE  18 C0  18 96  17 CA  17 8D  17 4C  17 1C  16 4A  --  0AF2C0
1B C5  1B 95  1B 6C  1A B2  1A 75  1A 34  1A 04  19 3B  --  0AF2D0
1D 5D  1D 26  1C E8  1C C5  1C 8A  1C 44  1C 18  1B E8  --  0AF2E0
21 67  1F 24  1F 05  1E DC  1E BD  1E 43  1E 2D  1D DC  --  0AF2F0
24 4E  24 49  24 29  24 24  24 04  23 FF  23 09  22 F3  --  0AF300
28 23  27 D6  27 1B  25 72  24 FD  24 EC  24 73  24 6E  --  0AF310
28 D1  28 B4  28 AF  28 8A  28 6E  28 69  28 44  28 28  --  0AF320
47 88  47 84  00 A0  00 0C  2A 0E  29 FD  28 FD  28 F8  --  0AF330
47 98  47 94  3F 76  3F 50  3E E1  3E CF  47 90  47 8C  --  0AF340
40 8A  40 62  40 5D  40 36  40 31  40 0D  3F FB  47 AC  --  0AF350
41 3E  41 16  41 11  40 E9  40 E4  40 BC  40 B7  40 8F  --  0AF360
44 C5  44 9F  44 8E  44 47  42 39  41 76  41 71  41 43  --  0AF370
FC 52  46 7E  46 79  45 D5  45 D0  45 51  45 4C  44 D6  --  0AF380
FC 72  FC 6E  FC 6A  FC 66  FC 62  FC 5E  FC 5A  FC 56  --  0AF390
FC 92  FC 8E  FC 8A  FC 86  FC 82  FC 7E  FC 7A  FC 76  --  0AF3A0
F9 5E  F9 4C  F9 38  F9 2C  F9 11  F8 F5  F8 D2  FC 96  --  0AF3B0
FA CE  FC 9E  FC 9A  FA B2  FA 9E  FA 5F  FA 53  F9 F3  --  0AF3C0
01 46  00 09  FC 47  FC 33  FB EE  FB D5  FB C9  FB 63  --  0AF3D0
C4 C2  C4 BE  C4 BA  C4 B6  C4 B2  C4 AE  C4 AA  C4 A6  --  0AF3E0
C4 E2  C4 DE  C4 DA  C4 D6  C4 D2  C4 CE  C4 CA  C4 C6  --  0AF3F0
C4 FE  C4 FA  C4 F6  C4 F2  C4 EE  C4 EA  C4 E6  01 FE  --  0AF400
A7 1C  A6 E5  A6 C3  A6 A1  A6 9C  A6 7F  A6 75  C5 02  --  0AF410
A9 DE  A9 61  A8 CA  A8 BA  A8 1D  A7 CD  A7 91  A7 76  --  0AF420
AB EA  AB 7D  AA CE  C5 0A  C5 06  AA A3  AA 8F  AA 5C  --  0AF430
AC CD  AC A1  AC 3C  AC 2B  C5 16  C5 12  C5 0E  AB FB  --  0AF440
C5 26  C5 22  C5 1E  AF 28  AE EA  AE AF  AD 58  C5 1A  --  0AF450
B2 01  B1 E7  B1 B4  B1 81  B1 03  B0 D0  B0 9D  B0 53  --  0AF460
B4 0D  B3 B5  B3 5C  B3 33  B2 A1  B2 80  B2 69  B2 1C  --  0AF470
B5 C2  B5 86  B5 25  B4 D8  B4 C7  B4 B6  B4 80  B4 6F  --  0AF480
B9 25  B7 F1  B7 1D  B6 88  B6 52  B6 1F  B6 12  B5 FE  --  0AF490
BA 6B  BA 3D  BA 0A  C5 2E  C5 2A  B9 4C  B9 3E  B9 36  --  0AF4A0
BC 6D  BB FF  BB C8  BB 78  BB 2D  BB 12  BA CD  BA BC  --  0AF4B0
BE 14  BE 00  BD E1  BD B4  BD A3  BD 66  BD 33  BC C0  --  0AF4C0
C5 32  BF 9B  BF 86  BF 4D  BF 45  BF 34  BF 02  BE 41  --  0AF4D0
C5 46  C0 99  C0 88  C0 44  C5 42  C5 3E  C5 3A  C5 36  --  0AF4E0
C1 E5  C1 BB  C1 B6  C1 B1  C1 90  C1 78  C1 17  C5 4A  --  0AF4F0
C3 BB  C3 74  C5 4E  C3 2D  C3 1C  C2 83  C2 3F  C2 14  --  0AF500
C4 3D  C4 30  C4 19  C4 0F  C4 00  C3 F8  C3 E6  C3 DA  --  0AF510
0B 94  16 5E  01 30  00 0C  C4 94  C4 76  C4 65  C4 4E  --  0AF520
16 76  16 72  16 6E  16 6A  16 66  16 62  0B BF  0B A6  --  0AF530
16 7A  0C A1  0C 9C  0C 97  0C 76  0C 33  0C 1E  0C 12  --  0AF540
16 7E  0D 84  0D 7F  0D 7A  0D 59  0D 14  0C FF  0C F3  --  0AF550
16 82  0E 67  0E 62  0E 5D  0E 3C  0D F7  0D E2  0D D6  --  0AF560
```

```
16 86 OF 4A OF 45 OF 40 OF 1F OE DA OE C5 OE B9 -- OAF570
10 57 10 52 10 4D 10 2C OF 9F OF 8A OF 7E 16 8A -- OAF580
11 00 10 FB 10 F6 10 D5 10 C3 10 A0 16 92 16 8E -- OAF590
12 25 11 FA 11 B1 11 AC 11 A7 11 86 11 74 11 49 -- OAF5A0
13 09 12 E8 12 D6 12 AB 12 62 12 5D 12 58 12 37 -- OAF5B0

13 F5 13 FO 13 EB 13 CA 13 B2 13 61 13 13 13 OE -- OAF5CO
14 DB 14 C2 16 96 14 AO 14 9B 14 96 14 75 14 1F -- OAF5DO
B2 52 16 52 15 DD 16 9A 15 3F 15 2E 15 17 14 FE -- OAF5EO
B2 72 B2 6E B2 6A B2 66 B2 62 B2 5E B2 5A B2 56 -- OAF5FO
B2 8E B2 8A B2 86 B2 82 B2 7E B2 7A B2 76 01 FE -- OAF600
AD 9C B2 AA B2 A6 B2 A2 B2 9E B2 9A B2 96 B2 92 -- OAF610
AE E2 AE A3 AE 92 AE 71 AE 56 AE 2C AE OA AD D1 -- OAF620
BO 47 BO 20 BO OF AF DE AF 67 AF 1F AF 07 AE EF -- OAF630
B1 19 B1 08 BO 99 BO 79 B2 B6 B2 B2 B2 AE BO 4E -- OAF640
00 OB B2 48 B2 16 B2 05 B1 96 B1 76 B1 4C B2 BA -- OAF650
93 BA AO 3A AO 36 AO 32 AO 2E AO 2A AO 26 01 CO -- OAF660
AO 56 AO 52 AO 4E AO 4A AO 46 AO 42 AO 3E 93 D8 -- OAF670
AO 76 AO 72 AO 6E AO 6A AO 66 AO 62 AO 5E AO 5A -- OAF680
AO 98 AO 94 AO 90 AO 8A AO 86 AO 82 AO 7E AO 7A -- OAF690
95 07 94 F8 94 DF 94 C3 94 BB 94 88 94 42 AO 9C -- OAF6AO
96 7C 96 77 96 2F 96 2A 96 04 95 FF 95 CB 95 OF -- OAF6BO
99 3C 98 1A 97 CA 97 A2 97 91 97 OF 96 A7 96 A2 -- OAF6CO
AO A8 AO A4 AO AO 99 AA 99 A5 99 88 99 6F 99 5E -- OAF6DO
9B 02 9A 5E AO CO AO BC AO B8 AO B4 AO BO AO AC -- OAF6EO
9D CA 9D C2 9D 5B 9D 29 9D 06 9C 7E 9B FB 9B 6B -- OAF6FO
9E 96 9E 83 9E 7E 9E 67 9E 62 9E 50 9E 2E 9D E1 -- OAF700
AO D6 AO D2 AO CE 9F 43 9F 35 9F OD 9E E5 9E BE -- OAF710
5B A2 AO OF 9F D4 9F A4 9F 90 9F 7C AO DE AO DA -- OAF720
5B C2 5B BE 5B BA 5B B6 5B B2 5B AE 5B AA 5B A6 -- OAF730
5B E2 5B DE 5B DA 5B D6 5B D2 5B CE 5B CA 5B C6 -- OAF740
4E BD 5B FE 5B FA 5B F6 5B F2 5B EE 5B EA 5B E6 -- OAF750
50 A4 50 7D 50 4D 4F AC 4F 88 4F 3B 4F 06 4E CE -- OAF760
51 EO 5C 16 5C 12 5C OE 5C OA 5C 06 5C 02 50 B2 -- OAF770
5C 1A 53 82 53 7B 53 1C 52 E2 52 8B 52 27 51 F2 -- OAF780
5C 3A 5C 36 5C 32 5C 2E 5C 2A 5C 26 5C 22 5C 1E -- OAF790
54 79 54 OF 53 FE 5C 4E 5C 4A 5C 46 5C 42 5C 3E -- OAF7AO
5C 5A 5C 56 5C 52 55 5A 55 3C 55 34 55 25 54 F9 -- OAF7BO
56 26 56 1F 55 B8 55 AE 5C 6A 5C 66 5C 62 5C 5E -- OAF7CO
57 38 57 27 56 FF 56 BE 56 AD 56 59 56 50 56 4B -- OAF7DO
5C 8C 5C 88 5C 7C 5C 78 5C 74 5C 70 57 AO 57 74 -- OAF7EO
58 C4 58 B3 58 8E 5C AO 5C 9C 5C 98 5C 94 5C 90 -- OAF7FO
5A 43 5A 1B 59 85 59 5B 59 28 59 09 58 F8 01 FE -- OAF800
5B 35 5B 00 5A F8 5A E9 5A D7 5A C3 5A 93 5A 6B -- OAF810
A2 D2 A2 CE A2 CA A2 C6 00 CO 00 OA 5B 82 5B 46 -- OAF820
A2 F2 A2 EE A2 EA A2 E6 A2 E2 A2 DE A2 DA A2 D6 -- OAF830
A3 1A A3 16 A3 12 A3 OE A3 02 A2 FE A2 FA A2 F6 -- OAF840
8F 38 8F 28 8F 15 8E 9F A3 2A A3 26 A3 22 A3 1E -- OAF850
90 CD 90 A8 90 A3 90 90 90 8B 8F A1 8F 90 8F 81 -- OAF860
A3 3A A3 36 A3 32 A3 2E 92 OE 91 F9 91 84 90 F9 -- OAF870
94 23 93 E7 93 AO 93 2F 92 F2 92 EO A3 42 A3 3E -- OAF880
95 7B A3 5E A3 5A A3 56 A3 52 A3 4E A3 4A A3 46 -- OAF890
98 EF 98 C2 98 76 96 F2 96 A2 96 37 95 F4 95 E2 -- OAF8AO
A3 66 9B 9B 9B 8A 9A F5 9A 2A 9A OA 99 F9 A3 62 -- OAF8BO
9D AO 9D 8C 9D 82 9D 71 9D 47 9D 36 9C 4B 9C 3A -- OAF8CO
A3 70 A3 6A 9E 6A 9E 59 9E 33 9E 12 9E 00 9D CD -- OAF8DO
FF A4 FF AO 00 64 00 09 A2 B7 A2 A6 9E 9E A3 74 -- OAF8EO
FF C4 FF CO FF BC FF B8 FF B4 FF BO FF AC FF A8 -- OAF8FO
FF E4 FF EO FF DC FF D8 FF D4 FF DO FF CC FF C8 -- OAF900
FC 4A FC 3D FC 1C FC OF FF F4 FF FO FF EC FF E8 -- OAF910
```

771

```
FD 81 FD 64 FD 05 FC E7 FC C1 FC B3 FC 91 FC 7C -- 0AF920
FE 98 FE 6D FE 4C FE 2A FE 15 FD EA FD C9 FD 9A -- 0AF930
FF 92 FF 71 FF 5C FF 31 FF 13 FE ED FE D1 FE AD -- 0AF940
89 30 89 2C 89 28 89 24 89 20 89 1C 03 84 00 07 -- 0AF950

89 50 89 4C 89 48 89 44 89 40 89 3C 89 38 89 34 -- 0AF960
89 58 5D A3 5D 7C 5D 60 5D 36 5D 0B 5D 03 89 54 -- 0AF970
5E 6D 5E 4E 5E 42 5D FE 5D F6 5D D7 89 60 89 5C -- 0AF980
89 6C 89 68 89 64 5E DF 5E CE 5E A6 5E 97 5E 7C -- 0AF990
5F 79 5F 51 5F 42 5F 27 5F 18 5E F9 5E EF 89 70 -- 0AF9A0
60 E4 60 CB 89 74 60 95 60 84 60 73 5F EA 5F 98 -- 0AF9B0
89 7C 89 78 61 91 61 72 61 61 61 50 61 11 61 09 -- 0AF9C0
89 9C 89 98 89 94 89 90 89 8C 89 88 89 84 89 80 -- 0AF9D0
89 BC 89 B8 89 B4 89 B0 89 AC 89 A8 89 A4 89 A0 -- 0AF9E0
63 38 63 10 62 7F 62 63 62 09 61 F1 61 CC 61 BF -- 0AF9F0
64 17 63 FC 63 F3 63 C4 63 8B 63 70 63 67 01 FE -- 0AFA00
66 81 66 6D 66 48 66 35 66 26 65 FC 65 1F 64 AA -- 0AFA10
67 75 67 62 67 53 67 1C 67 08 66 E7 66 D4 66 C5 -- 0AFA20
68 89 68 70 68 57 68 3F 68 15 67 EA 67 AA 67 96 -- 0AFA30
69 6D 69 3E 69 23 68 F8 68 E1 68 C8 68 AC 68 A2 -- 0AFA40
6A 75 89 C4 89 C0 6A 4C 6A 1D 6A 02 69 AC 69 81 -- 0AFA50
6B 6C 6B 38 6B 16 6B 05 6A E8 6A C8 6A AF 6A 8D -- 0AFA60
6C 4D 6C 28 6C 0F 89 C8 6B DE 6B B7 6B 9E 6B 85 -- 0AFA70
6C FD 6C EE 6C DD 6C AD 6C 9C 6C 83 6C 72 6C 55 -- 0AFA80
6E 06 6D F7 6D B0 6D A6 6D 75 89 D0 89 CC 6D 1C -- 0AFA90
6F 74 6F 63 6F 52 6E C9 6E 77 6E 58 6E 30 6E 21 -- 0AFAA0
70 75 70 23 6F E6 6F D7 6F BC 6F AD 6F 8E 6F 84 -- 0AFAB0
71 62 71 53 71 34 71 2A 71 1A 71 12 70 BC 70 B2 -- 0AFAC0
72 C0 72 B8 72 62 72 58 72 1B 71 C9 71 8C 71 7D -- 0AFAD0
73 C1 73 6F 73 32 73 23 73 08 72 F9 72 DA 72 D0 -- 0AFAE0
74 AE 74 9F 74 80 74 76 74 66 74 5E 74 08 73 FE -- 0AFAF0
76 0C 76 04 75 AE 75 A4 75 67 75 15 74 D8 74 C9 -- 0AFB00
76 C3 76 B9 76 A5 76 75 76 6B 76 57 76 27 76 1D -- 0AFB10
77 8C 77 7D 77 5E 77 54 77 41 77 11 77 07 76 F3 -- 0AFB20
78 38 78 2C 78 13 77 FC 77 E5 77 CE 77 B6 77 A7 -- 0AFB30
78 E0 78 D1 78 B6 78 A7 78 88 78 7E 78 6B 78 42 -- 0AFB40
7A 92 7A 8A 7A 34 7A 2A 7A 0E 79 E0 79 B2 79 84 -- 0AFB50
7B 21 7B 12 7A F7 7A E8 7A C9 7A BF 7A AD 7A A3 -- 0AFB60
7C 10 7C 01 7B 9C 7B 83 7B 6C 7B 55 7B 3E 7B 29 -- 0AFB70
7C A8 7C A1 89 DE 7C 77 7C 6F 89 DA 89 D6 7C 31 -- 0AFB80
7D 19 7C EE 7C CA 7C C5 7C C0 7C B9 7C B4 7C AD -- 0AFB90
8A 06 8A 02 89 FE 89 FA 89 EE 89 EA 89 E6 89 E2 -- 0AFBA0
7E 5E 7E 59 7E 39 7E 34 7D F2 7D ED 7D C9 7D C4 -- 0AFBB0
7E F1 7E DE 7E C1 7E B9 7E B4 7E A4 7E 9C 7E 97 -- 0AFBC0
7F 49 7F 44 7F 38 7F 1B 7F 13 7F 0E 7E FE 7E F6 -- 0AFBD0
8A 0A 7F B8 7F 9F 7F 84 7F 67 7F 5F 7F 5A 7F 51 -- 0AFBE0
80 44 80 29 80 0C 80 04 7F FF 7F EF 7F E7 7F E2 -- 0AFBF0
8A 16 8A 12 80 CF 80 B6 80 9B 8A 0E 80 5D 01 FE -- 0AFC00
81 54 81 34 81 14 80 F4 8A 26 8A 22 8A 1E 8A 1A -- 0AFC10
82 47 82 2E 82 0B 82 03 81 D2 81 B9 81 94 81 74 -- 0AFC20
8A 3A 8A 36 8A 32 8A 2E 8A 2A 82 84 82 75 82 60 -- 0AFC30
83 49 83 17 83 12 83 0A 82 EE 82 D0 82 A8 82 A3 -- 0AFC40
8A 4E 8A 4A 8A 46 8A 42 8A 3E 83 77 83 6C 83 51 -- 0AFC50
8A 6E 8A 6A 8A 66 8A 62 8A 5E 8A 5A 8A 56 8A 52 -- 0AFC60
83 BC 8A 8A 8A 86 8A 82 8A 7E 8A 7A 8A 76 8A 72 -- 0AFC70
84 EF 84 CF 84 AE 84 9E 84 85 84 54 84 45 83 DC -- 0AFC80
85 E5 85 BF 85 99 85 86 85 79 85 4D 85 2D 85 0E -- 0AFC90
86 A0 86 9B 86 84 86 7F 86 6D 86 43 86 31 86 0B -- 0AFCA0
87 0D 87 02 86 ED 86 E8 86 DD 86 C6 86 C1 86 B6 -- 0AFCB0
87 89 87 63 8A 92 8A 8E 87 3A 87 35 87 2A 87 12 -- 0AFCC0
```

772

```
05 1A 00 04 89 10 88 ED 88 B2 88 75 87 F9 87 C3 -- 0AFCD0
9C FC 9C F8 9C F4 9C F0 9C EC 9C E8 9C E4 9C E0 -- 0AFCE0
9D 1E 9D 1A 9D 16 9D 12 9D 0E 9D 0A 9D 06 9D 00 -- 0AFCF0

50 75 9D 3A 9D 36 9D 32 9D 2E 9D 2A 9D 26 9D 22 -- 0AFD00
51 3A 51 35 51 2D 51 00 50 FB 50 97 50 88 50 7A -- 0AFD10
52 BF 52 B0 52 97 52 84 52 5F 52 46 52 1E 51 DD -- 0AFD20
53 B3 9D 42 9D 3E 53 42 53 35 53 0C 52 FD 52 DB -- 0AFD30
54 98 54 7C 54 5E 54 3B 54 1B 54 0D 9D 46 53 E7 -- 0AFD40
9D 5E 9D 5A 9D 56 9D 52 9D 4E 9D 4A 54 B9 54 A6 -- 0AFD50
55 AA 55 80 55 70 55 29 55 04 54 F3 9D 66 9D 62 -- 0AFD60
9D 86 9D 82 9D 7E 9D 7A 9D 76 9D 72 9D 6E 9D 6A -- 0AFD70
9D A6 9D A2 9D 9E 9D 9A 9D 96 9D 92 9D 8E 9D 8A -- 0AFD80
9D C6 9D C2 9D BE 9D BA 9D B6 9D B2 9D AE 9D AA -- 0AFD90
9D E6 9D E2 9D DE 9D DA 9D D6 9D D2 9D CE 9D CA -- 0AFDA0
56 AA 56 8B 56 6C 56 4D 56 2E 56 0F 55 F0 9D EA -- 0AFDB0
57 9B 57 64 57 54 57 27 57 22 57 0B 56 E8 56 C9 -- 0AFDC0
58 C1 58 AA 58 8A 58 73 58 46 58 31 58 13 58 03 -- 0AFDD0
5A 15 59 EC 59 D2 59 C2 59 38 59 21 58 F1 58 D5 -- 0AFDE0
5A A9 5A 96 5A 86 5A 6C 5A 5C 5A 48 5A 3A 5A 2C -- 0AFDF0
5B 7E 5B 54 5B 43 5B 34 5B 12 5A E9 5A C3 01 FE -- 0AFE00
5C 81 5C 54 5C 3B 5C 2B 5C 12 5C 05 5B DB 5B CC -- 0AFE10
5D 42 5D 2F 5D 1F 5C F4 5C D8 5C C5 5C B8 5C AB -- 0AFE20
5D ED 5D DF 5D C5 5D AB 5D 9B 5D 82 5D 6D 5D 5E -- 0AFE30
5F 35 5F 17 5F 12 5F 0D 5E E3 5E 08 5E 00 5D F5 -- 0AFE40
9D F2 9D EE 5F BB 5F B3 5F 9E 5F 81 5F 5B 5F 4A -- 0AFE50
9D FE 60 BD 60 9D 60 88 60 7B 9D FA 60 64 9D F6 -- 0AFE60
9E 16 9E 12 9E 0E 61 C8 9E 0A 9E 06 61 0E 9E 02 -- 0AFE70
9E 32 9E 2E 9E 2A 9E 26 62 09 9E 22 9E 1E 9E 1A -- 0AFE80
62 97 62 89 9E 3E 9E 3A 9E 36 62 6E 62 59 62 4A -- 0AFE90
63 4D 63 35 63 25 63 0E 62 F0 62 E0 62 C8 62 B6 -- 0AFEA0
9E 42 63 ED 63 E4 63 C4 63 A4 63 8C 63 78 63 5D -- 0AFEB0
64 92 64 88 9E 4A 64 5B 64 51 9E 46 64 24 64 1A -- 0AFEC0
9E 5C 9E 58 9E 54 65 18 65 09 64 F7 64 D5 64 B3 -- 0AFED0
65 D3 65 B2 65 4C 65 39 9E 6C 9E 68 9E 64 9E 60 -- 0AFEE0
9E 88 9E 84 9E 80 9E 7C 9E 78 9E 74 9E 70 65 E4 -- 0AFEF0
9E 9C 9E 98 9E 94 9E 90 66 72 66 6A 66 0E 9E 8C -- 0AFF00
67 F7 67 D6 67 AD 67 7B 67 0E 66 F2 66 EA 66 8E -- 0AFF10
69 3A 69 1F 68 FE 68 D5 68 A3 68 36 68 1A 68 12 -- 0AFF20
69 FE 69 F0 69 D6 69 C3 69 9E 69 82 69 78 69 42 -- 0AFF30
6B D6 6B 7D 6B 37 6A F1 6A BF 6A 52 9E A0 6A 0D -- 0AFF40
6C 75 9E AE 9E AA 6C 41 9E A6 6C 25 6C 06 6B E5 -- 0AFF50
6E EC 6E D5 6E C4 6E 71 6D FF 6D F5 6D F0 6D D3 -- 0AFF60
70 0E 6F FD 6F AF 6F 9E 6F 89 6F 78 6F 5C 6F 1B -- 0AFF70
71 42 71 25 71 07 70 F0 70 E0 70 C6 9E B6 9E B2 -- 0AFF80
9E D6 9E D2 9E CE 9E CA 72 24 71 D1 71 8E 71 6B -- 0AFF90
9E F6 9E F2 9E EE 9E EA 9E E6 9E E2 9E DE 9E DA -- 0AFFA0
9F 16 9F 12 9F 0E 9F 0A 9F 06 9F 02 9E FE 9E FA -- 0AFFB0
74 14 73 F7 73 C9 73 BE 73 AA 73 80 73 6F 72 D8 -- 0AFFC0
75 0B 74 EB 74 CE 74 BB 74 89 74 78 74 4D 74 39 -- 0AFFD0
76 2D 76 12 76 01 75 9B 75 78 75 70 75 50 75 21 -- 0AFFE0
76 B6 9F 1E 9F 1A 76 60 76 5B 76 56 76 51 76 37 -- 0AFFF0
77 88 77 62 77 3B 77 1F 77 04 76 E8 76 C7 01 FE -- 0B0000
79 B7 79 A1 79 8C 79 2A 9F 26 9F 22 78 35 77 9D -- 0B0010
7A D0 7A BB 7A 54 7A 42 7A 2D 7A 05 79 F0 79 CC -- 0B0020
9F 32 7B BE 7B A0 7B 9B 7B 96 9F 2E 9F 2A 7A FD -- 0B0030
7C FF 7C B5 7C A4 7C 41 9F 4A 9F 46 9F 42 9F 3E -- 0B0040
7E 99 7E 5C 7E 4B 7D F7 7D E3 7D 71 7D 60 7D 10 -- 0B0050
80 01 7F FC 9F 4E 7F 52 7F 41 7F 01 7E F0 7E AA -- 0B0060
81 31 81 15 9F 62 9F 5E 9F 5A 80 D2 80 60 80 5B -- 0B0070
```

773

```
82 23 82 03 81 ED 81 D0 81 BF 81 8D 81 56 81 4E -- 0B0080
9F 6A 9F 66 82 65 82 60 82 5B 82 56 82 4E 82 2B -- 0B0090

83 4C 83 26 83 06 82 F5 82 ED 82 D0 82 BD 82 A1 -- 0B00A0
84 07 83 EA 83 D9 83 A7 83 63 83 5E 83 59 83 54 -- 0B00B0
84 B5 84 B0 84 A8 84 7B 84 73 84 53 84 3A 84 1D -- 0B00C0
85 FB 85 E6 85 D0 85 80 85 56 85 3C 85 14 84 BA -- 0B00D0
9F 72 87 E7 9F 6E 87 AF 87 6F 86 F6 86 DB 86 24 -- 0B00E0
9F 7A 9F 76 88 43 88 3E 88 39 88 31 88 27 88 14 -- 0B00F0
89 9E 89 81 89 64 89 47 89 27 88 E0 88 91 88 63 -- 0B0100
8A 7C 8A 69 8A 56 8A 39 8A 29 8A 15 89 DE 89 BB -- 0B0110
9F 96 9F 92 9F 8E 9F 8A 9F 86 9F 82 9F 7E 8A 84 -- 0B0120
9F B6 9F B2 9F AE 9F AA 9F A6 9F A2 9F 9E 9F 9A -- 0B0130
8B C6 8B 88 8B 83 8A 9C 9F C6 9F C2 9F BE 9F BA -- 0B0140
8D 66 8D 5E 8D 2C 8D 27 8D 1F 8C EC 8C CB 8C AF -- 0B0150
8E 51 8E 1A 8D F4 8D E1 8D CE 8D B1 8D A1 8D 8D -- 0B0160
9F CE 9F CA 8E B1 8E 9F 8E 86 8E 78 8E 73 8E 64 -- 0B0170
9F E2 9F DE 8F A8 8F 93 8F 66 8F 4E 8E D1 9F D2 -- 0B0180
91 31 90 E1 90 DC 90 82 90 7D 90 45 8F D3 9F E6 -- 0B0190
91 FE 91 EA 91 A8 9F EE 9F EA 91 8B 91 76 91 49 -- 0B01A0
94 FD 94 EF A0 06 A0 02 9F FE 9F FA 9F F6 9F F2 -- 0B01B0
97 AD 97 2F 96 7D 96 08 95 F5 95 8C 95 35 95 15 -- 0B01C0
98 1D A0 18 A0 12 A0 0E A0 0A 97 E5 97 D7 97 C2 -- 0B01D0
A0 1C 9A E2 9A D4 99 4E 98 FF 98 EC 98 63 98 2B -- 0B01E0
00 0B 9C D3 9C A3 9C 86 9B 2A A0 2A A0 26 A0 20 -- 0B01F0
6A CA 6A B0 77 E2 77 DE 77 DA 77 D6 00 E8 01 FE -- 0B0200
78 02 77 FE 77 FA 77 F6 77 F2 77 EE 77 EA 77 E6 -- 0B0210
6C 7B 6C 73 6C 38 6C 16 6B A6 6B 3E 6A E3 78 06 -- 0B0220
6C F1 6C E5 6C C6 6C B6 6C 9F 6C 90 78 0E 78 0A -- 0B0230
6D 9B 78 1E 78 1A 78 16 78 12 6D 56 6D 4E 6D 13 -- 0B0240
78 22 6E 21 6E 10 6D EC 6D DB 6D CC 6D BB 6D AC -- 0B0250
6F 03 6E DC 6E CB 6E 90 6E 6C 6E 5B 6E 4F 6E 40 -- 0B0260
70 67 70 56 70 3D 6F A7 6F 95 6F 7B 6F 53 6F 2B -- 0B0270
71 49 71 28 71 02 70 E1 70 BB 70 9B 70 88 70 74 -- 0B0280
72 40 72 30 71 F5 71 D3 71 C2 71 B5 71 8F 71 6F -- 0B0290
78 2E 72 AB 72 98 72 85 72 74 72 6D 72 5E 72 4F -- 0B02A0
78 4E 78 4A 78 46 78 42 78 3E 78 3A 78 36 78 32 -- 0B02B0
74 76 74 65 74 11 73 F0 73 17 72 E5 72 CC 78 52 -- 0B02C0
77 37 76 C9 76 A8 75 E3 75 B5 74 B8 74 96 74 85 -- 0B02D0
01 66 00 09 77 CC 77 BB 77 8A 77 68 77 57 77 48 -- 0B02E0
FB C2 FB BE E1 76 E1 5A E1 2C E1 03 FB BA FB B6 -- 0B02F0
E3 04 E2 E1 E2 CD E2 AA E2 96 E2 5E E2 30 E2 04 -- 0B0300
E3 E0 E3 BD E3 A9 E3 86 E3 72 E3 4F E3 3B E3 18 -- 0B0310
E4 BC E4 99 E4 85 E4 62 E4 4E E4 2B E4 17 E3 F4 -- 0B0320
E5 98 E5 75 E5 61 E5 3E E5 2A E5 07 E4 F3 E4 D0 -- 0B0330
E6 74 E6 51 E6 3D E6 1A E6 06 E5 E3 E5 CF E5 AC -- 0B0340
E7 50 E7 2D E7 19 E6 F6 E6 E2 E6 BF E6 AB E6 88 -- 0B0350
E8 2C E8 09 E7 F5 E7 D2 E7 BE E7 9B E7 87 E7 64 -- 0B0360
E9 08 E8 E5 E8 D1 E8 AE E8 9A E8 77 E8 63 E8 40 -- 0B0370
E9 E4 E9 C1 E9 AD E9 8A E9 76 E9 53 E9 3F E9 1C -- 0B0380
EA C0 EA 9D EA 89 EA 66 EA 52 EA 2F EA 1B E9 F8 -- 0B0390
EB 9C EB 79 EB 65 EB 42 EB 2E EB 0B EA F7 EA D4 -- 0B03A0
EC 78 EC 55 EC 41 EC 1E EC 0A EB E7 EB D3 EB B0 -- 0B03B0
ED 3C ED 1D ED 0F EC F0 EC E2 EC C3 EC AF EC 8C -- 0B03C0
ED F0 ED D1 ED C3 ED A4 ED 96 ED 77 ED 69 ED 4A -- 0B03D0
EE A4 EE 85 EE 77 EE 58 EE 4A EE 2B EE 1D ED FE -- 0B03E0
FB E6 FB E2 FB DE FB DA FB CE EE DF EE D1 EE B2 -- 0B03F0
F1 3E F1 01 F0 FC F0 DF F0 B5 EF 7B EF 28 01 FE -- 0B0400
F4 2D F2 F3 F2 A0 F2 1D F1 CA F1 80 F1 76 F1 5A -- 0B0410
F5 61 F4 F8 F4 EE F4 D2 F4 B6 F4 79 F4 74 F4 57 -- 0B0420
```

```
F7 C7 F7 BB F7 91 F7 54 F7 4F F7 32 F7 08 F5 B4 -- 0B0430
FB 04 FA FF FA E2 FA B8 F9 64 F9 11 F8 77 F8 24 -- 0B0440
A2 2A A2 26 00 50 00 0C FB AA FB 9E FB 70 FB 41 -- 0B0450
A2 4A A2 46 A2 42 A2 3E A2 3A A2 36 A2 32 A2 2E -- 0B0460
9D 4C A2 66 A2 62 A2 5E A2 5A A2 56 A2 52 A2 4E -- 0B0470
9E D4 9E BB 9E 28 9E 0F 9D F6 9D DB 9D 8F 9D 76 -- 0B0480
A2 7E A2 7A A0 6E A2 76 A2 72 9F AE A2 6E A2 6A -- 0B0490
00 52 00 0D A1 86 A1 6B A1 13 A0 FA A0 A7 A2 82 -- 0B04A0
11 2C 11 28 11 24 11 20 11 1C 11 18 11 14 11 10 -- 0B04B0
11 4C 11 48 11 44 11 40 11 3C 11 38 11 34 11 30 -- 0B04C0
0E B9 0E AA 0E 7D 11 60 11 5C 11 58 11 54 11 50 -- 0B04D0
10 09 0F ED 0F BF 0F A7 0F 29 0F 0D 0F 00 0E EB -- 0B04E0
10 FF 10 F5 10 DE 10 78 10 6C 10 60 10 58 10 39 -- 0B04F0
C8 B2 C8 61 C8 31 C7 CA C7 9A 00 28 00 0C 11 07 -- 0B0500
CA 6C CA 29 C9 DC C9 C7 C9 7F C9 57 C9 14 C9 01 -- 0B0510
00 0B CC 35 CB ED CB 71 CB 25 CB 10 CA CD CA 81 -- 0B0520
2E D0 2E CC 2E C8 20 E8 20 D0 2E C4 2E C0 01 B2 -- 0B0530
2E F0 2E EC 2E E8 2E E4 2E E0 2E DC 2E D8 2E D4 -- 0B0540
2F 10 2F 0C 2F 08 2F 04 2F 00 2E FC 2E F8 2E F4 -- 0B0550
21 83 21 59 21 54 21 23 21 12 2F 1C 2F 18 2F 14 -- 0B0560
22 CA 22 AA 22 7E 22 5E 22 1E 21 FE 21 BF 21 9F -- 0B0570
23 8B 23 86 23 61 23 44 23 3C 23 37 23 0A 22 EA -- 0B0580
2F 2C 2F 28 2F 24 2F 20 23 DA 23 CB 23 B0 23 93 -- 0B0590
24 79 24 59 24 1A 2F 40 2F 3C 2F 38 2F 34 2F 30 -- 0B05A0
25 9B 25 96 25 69 25 46 25 1A 24 EC 24 E7 24 B9 -- 0B05B0
26 54 26 45 26 0F 25 F2 25 EA 25 E5 25 C0 25 A3 -- 0B05C0
2F 60 2F 5C 2F 58 2F 54 2F 50 2F 4C 2F 48 2F 44 -- 0B05D0
2F 80 2F 7C 2F 78 2F 74 2F 70 2F 6C 2F 68 2F 64 -- 0B05E0
26 C6 26 90 26 7F 2F 94 2F 90 2F 8C 2F 88 2F 84 -- 0B05F0
27 98 27 8F 27 87 27 82 27 76 27 13 26 EE 01 FE -- 0B0600
28 04 27 FB 27 F3 27 EE 27 E2 27 C2 27 A5 27 9D -- 0B0610
28 78 28 6B 28 63 28 5E 28 4E 28 2E 28 11 28 09 -- 0B0620
28 EC 28 DF 28 D7 28 D2 28 C2 28 A2 28 85 28 7D -- 0B0630
29 B6 29 98 29 89 29 64 29 36 29 16 28 F9 28 F1 -- 0B0640
2A 14 29 D5 2F AC 2F A8 2F A4 2F A0 2F 9C 2F 98 -- 0B0650
2A B8 2A B3 2A A7 2A 9F 2A 9A 2A 8B 2A 6B 2A 43 -- 0B0660
2B 2A 2B 25 2B 19 2B 11 2B 0C 2A FD 2A DD 2A C0 -- 0B0670
2F B8 2B A3 2B 94 2B 72 2B 6B 2B 5D 2B 4F 2B 32 -- 0B0680
2C 9B 2C 92 2C 87 2C 70 2B C8 2B BB 2F C0 2F BC -- 0B0690
2F D0 2F CC 2F C8 2F C4 2C EC 2C CF 2C C6 2C B8 -- 0B06A0
2D 6A 2D 5D 2D 55 2D 50 2D 40 2D 16 2F D8 2F D4 -- 0B06B0
2F E4 2D DE 2D BE 2F E0 2F DC 2D 94 2D 77 2D 6F -- 0B06C0
2E 62 2E 5A 2F F0 2F EC 2F E8 2E 32 2E 18 2E 07 -- 0B06D0
FE 5E FE 5A FE 56 01 46 00 0A 2E B8 2E 9E 2E 81 -- 0B06E0
FE 7E FE 7A FE 76 FE 72 FE 6E FE 6A FE 66 FE 62 -- 0B06F0
F0 67 F0 3A F0 35 FE 92 FE 8E FE 8A FE 86 FE 82 -- 0B0700
F1 46 F1 41 F1 3C F1 2B F0 FA F0 D2 F0 9C F0 7B -- 0B0710
F1 73 F1 6E F1 69 F1 64 F1 5F F1 5A F1 55 F1 4D -- 0B0720
FE AE FE AA FE A6 FE A2 FE 9E FE 9A FE 96 F1 78 -- 0B0730
F1 8F FE CA FE C6 FE C2 FE BE FE BA FE B6 FE B2 -- 0B0740
F2 D4 F2 CC F2 C3 F2 BE F2 9F F2 46 F1 ED F1 C8 -- 0B0750
FE DE FE DA FE D6 FE D2 FE CE F3 37 F3 0A F2 D9 -- 0B0760
F3 B0 F3 AB F3 A6 F3 5E F3 59 F3 48 FE E6 FE E2 -- 0B0770
F4 23 F4 11 F3 D8 FE F6 FE F2 FE EE FE EA F3 BF -- 0B0780
F4 DC F4 B9 F4 9E F4 99 F4 8E F4 7A F4 4A F4 33 -- 0B0790
F5 D5 F5 C8 F5 AC FE FE FE FA F5 71 F5 55 F5 27 -- 0B07A0
FF 06 FF 02 F6 81 F6 6D F6 63 F6 4C F6 45 F5 FF -- 0B07B0
FF 26 FF 22 FF 1E FF 1A FF 16 FF 12 FF 0E FF 0A -- 0B07C0
F7 65 F7 43 F6 D3 F6 B3 FF 36 FF 32 FF 2E FF 2A -- 0B07D0
```

```
F8 E1 F8 A9 F8 A2 F8 8E F8 1E F7 F9 F7 E1 F7 BC -- 0B07E0
FB 2F FB 27 FB 12 FB 0D FA F9 FA E5 F9 5C F9 3B -- 0B07F0
FF 42 FF 3E FF 3A FC 54 FC 42 FC 1D FB 66 01 FE -- 0B0800
FC C2 FC 9B FC 74 FF 56 FF 52 FF 4E FF 4A FF 46 -- 0B0810
FE 1D FD D3 FD AC FD 85 FD 5E FD 37 FD 10 FC E9 -- 0B0820
DF DA DF D6 DF D2 DF CE DF CA 01 9A 00 09 FE 2F -- 0B0830
C6 62 C6 3F DF E6 C6 01 C5 E1 C5 BE DF E2 DF DE -- 0B0840
DF F0 DF EC C7 2A C6 F8 C6 EA C6 CD C6 AF C6 82 -- 0B0850
E0 10 E0 0C E0 08 E0 04 E0 00 DF FC DF F8 DF F4 -- 0B0860
E0 32 E0 2E E0 2A E0 26 E0 22 E0 1E E0 1A E0 14 -- 0B0870
C9 B7 C7 52 E0 4A E0 46 E0 42 E0 3E E0 3A E0 36 -- 0B0880
E0 60 CB 55 CB 09 CA E6 E0 5C E0 58 E0 54 E0 50 -- 0B0890
CC 9D CC 7F CC 4C CC 2C CC 10 CB F4 CB DC E0 64 -- 0B08A0
CD 9E CD 74 CD 43 CD 35 CD 25 CC F9 CC D9 CC BD -- 0B08B0
CE A3 CE 84 CE 6B CE 48 CE 38 CE 02 CD EA CD C7 -- 0B08C0
E0 74 E0 70 E0 6C E0 68 CF 0A CE F9 CE E0 CE BC -- 0B08D0
CF 76 E0 90 E0 8C E0 88 E0 84 E0 80 E0 7C E0 78 -- 0B08E0
E0 9C E0 98 E0 94 D0 00 CF E0 CF C4 CF B0 CF 88 -- 0B08F0
D0 69 D0 57 E0 B4 E0 B0 E0 AC E0 A8 E0 A4 E0 A0 -- 0B0900
E0 C0 E0 BC E0 B8 D0 F2 D0 E1 D0 C1 D0 A5 D0 91 -- 0B0910
E0 CC D2 85 D2 1F D2 03 D1 A8 D1 47 E0 C8 E0 C4 -- 0B0920
D2 FC D2 E4 E0 E4 E0 E0 E0 DC E0 D8 E0 D4 E0 D0 -- 0B0930
D3 DB D3 C2 D3 B3 D3 99 D3 7E D3 44 D3 2C D3 14 -- 0B0940
D5 12 D5 00 D4 F0 D4 D5 D4 8B D4 7B D4 4F D4 2E -- 0B0950
D8 0E D7 56 D7 11 D6 E1 D6 B3 D6 7C D6 23 D5 53 -- 0B0960
E0 EC E0 E8 D8 AB D8 9F D8 8C D8 78 D8 68 D8 51 -- 0B0970
D9 48 D9 30 D9 18 D9 00 D8 E8 E0 F8 E0 F4 E0 F0 -- 0B0980
DA 91 DA 83 DA 5F DA 48 DA 2C D9 F4 D9 E5 D9 83 -- 0B0990
DC 40 DB C2 DB 83 DB 55 DB 03 DA F1 DA E3 DA CB -- 0B09A0
DE 63 DE 24 DD BC DD 78 DD 31 DC F4 DC C4 DC 90 -- 0B09B0
DF BF DF 9E DF 48 DE B7 DE AB DE 99 DE 86 DE 78 -- 0B09C0
30 AC 30 9A 30 87 30 71 30 5F 30 19 00 FA 00 0B -- 0B09D0
3E 34 31 EB 31 92 31 4F 31 29 31 0D 30 E7 30 C2 -- 0B09E0
33 CD 33 77 3E 4E 3E 4A 3E 46 3E 42 3E 3E 3E 3A -- 0B09F0
3E 62 3E 5E 3E 5A 34 0F 33 FE 3E 56 3E 52 01 FE -- 0B0A00
3E 82 3E 7E 3E 7A 3E 76 3E 72 3E 6E 3E 6A 3E 66 -- 0B0A10
34 73 3E 9E 3E 9A 3E 96 3E 92 3E 8E 3E 8A 3E 86 -- 0B0A20
35 AA 35 93 35 7C 35 5A 35 32 35 12 34 EF 34 8F -- 0B0A30
36 5F 36 39 36 1D 36 09 35 FC 35 E3 35 D6 35 C7 -- 0B0A40
3E B8 3E B4 3E AE 3E AA 3E A6 3E A2 36 95 36 6E -- 0B0A50
38 21 38 19 37 E3 37 DE 37 63 37 3C 37 29 36 BC -- 0B0A60
3E C4 3E C0 3E BC 39 6A 39 62 39 2D 39 28 38 DC -- 0B0A70
39 9A 39 87 3E DC 3E D8 3E D4 3E D0 3E CC 3E C8 -- 0B0A80
3A 6A 3A 60 3A 45 3A 22 39 F2 39 DB 39 C8 39 B1 -- 0B0A90
3E E4 3E E0 3B AA 3B A2 3B 6D 3B 68 3A 7F 3A 77 -- 0B0AA0
3C FB 3C E8 3F 04 3F 00 3E F4 3E F0 3E EC 3E E8 -- 0B0AB0
3E 11 3D FB 3D C4 3D AE 3D 4F 3D 38 3D 25 3D 12 -- 0B0AC0
A4 62 A4 5E 87 7A A4 5A A4 56 A4 52 02 3A 00 09 -- 0B0AD0
A4 82 A4 7E A4 7A A4 76 A4 72 A4 6E A4 6A A4 66 -- 0B0AE0
88 D4 88 A0 88 6B 88 36 88 01 A4 8E A4 8A A4 86 -- 0B0AF0
A4 AA A4 A6 A4 A2 A4 9E A4 9A A4 96 A4 92 89 08 -- 0B0B00
A4 CA A4 C6 A4 C2 A4 BE A4 BA A4 B6 A4 B2 A4 AE -- 0B0B10
8A 23 8A 03 89 E4 89 CC 89 A3 A4 D6 A4 D2 A4 CE -- 0B0B20
A4 E0 A4 DA 8A ED 8A C0 8A A2 8A 76 8A 58 8A 3B -- 0B0B30
8B EE 8B E9 A4 E8 8B 88 8B 81 8B 7A 8B 2C A4 E4 -- 0B0B40
8C BC 8C B7 8C AF 8C A5 8C 24 8C 1A 8B F8 8B F3 -- 0B0B50
8D BD 8D 94 A4 F0 A4 EC 8D 5F 8D 55 8C C6 8C C1 -- 0B0B60
A5 04 A5 00 A4 FC A4 F8 8E 13 8D F3 A4 F4 8D C7 -- 0B0B70
```

```
8F  5D  8F  00  8E  F6  8E  D9  8E  B9  8E  89  8E  7C  8E  60  --  0B0B80
A5  0C  A5  08  8F  FD  8F  F4  8F  D4  8F  B6  8F  86  8F  79  --  0B0B90
90  33  A5  28  A5  24  A5  20  A5  1C  A5  18  A5  14  A5  10  --  0B0BA0
91  62  91  21  91  0F  90  EF  90  BE  90  A0  90  70  90  4A  --  0B0BB0
A5  3C  A5  38  A5  34  A5  30  A5  2C  91  A5  91  9D  91  6C  --  0B0BC0
A5  5C  A5  58  A5  54  A5  50  A5  4C  A5  48  A5  44  A5  40  --  0B0BD0
91  F6  A5  78  A5  74  A5  70  A5  6C  A5  68  A5  64  A5  60  --  0B0BE0
94  5F  94  12  93  F4  93  C9  93  97  93  6A  93  15  92  1E  --  0B0BF0
95  00  94  E2  94  C4  94  A1  94  92  94  8A  94  69  01  FE  --  0B0C00
A5  80  A5  7C  95  FD  95  CE  95  C6  95  A9  95  48  95  27  --  0B0C10
97  11  96  DD  96  B3  96  95  A5  90  A5  8C  A5  88  A5  84  --  0B0C20
98  86  98  77  98  04  97  E2  97  AB  97  65  97  49  97  2D  --  0B0C30
99  8B  99  73  A5  98  99  41  99  25  A5  94  98  B0  98  A8  --  0B0C40
A5  A4  9A  7D  9A  61  9A  3F  9A  04  99  E8  A5  A0  A5  9C  --  0B0C50
A5  C4  A5  C0  A5  BC  A5  B8  A5  B4  A5  B0  A5  AC  A5  A8  --  0B0C60
9B  DF  9B  8C  9B  67  9B  05  9A  E5  9A  C6  9A  9B  A5  C8  --  0B0C70
A5  CC  9D  3B  9D  0F  9C  C3  9C  57  9C  22  9C  06  9B  FE  --  0B0C80
A5  D8  A5  D4  A5  D0  9E  18  9D.C1  9D  AA  9D  92  9D  6B  --  0B0C90
9F  3C  9E  E5  A5  E8  A5  E4  A5  E0  9E  C1  9E  9C  A5  DC  --  0B0CA0
A5  F4  A5  F0  A0  0B  9F  ED  9F  D9  9F  9B  9F  6A  A5  EC  --  0B0CB0
A6  14  A6  10  A6  0C  A6  08  A6  04  A6  00  A5  FC  A5  F8  --  0B0CC0
A6  34  A6  30  A6  2C  A6  28  A6  24  A6  20  A6  1C  A6  18  --  0B0CD0
A6  54  A6  50  A6  4C  A6  48  A6  44  A6  40  A6  3C  A6  38  --  0B0CE0
A1  6D  A1  4E  A1  2F  A1  10  A0  DF  A0  35  A6  5C  A6  58  --  0B0CF0
A4  10  A3  D8  A3  A0  A3  68  A3  30  A2  F8  A2  C0  A1  8C  --  0B0D00
B8  34  CA  0A  CA  04  CA  00  C9  FC  C9  F8  06  10  00  0A  --  0B0D10
CA  26  CA  22  CA  1E  CA  1A  CA  16  CA  12  CA  0E  B8  4F  --  0B0D20
CA  3E  CA  3A  CA  36  CA  32  CA  2E  CA  2A  B8  B9  B8  9E  --  0B0D30
CA  56  CA  52  CA  4E  CA  4A  B9  37  B9  1C  CA  46  CA  42  --  0B0D40
CA  6E  B9  BF  B9  A4  CA  6A  CA  66  CA  62  CA  5E  CA  5A  --  0B0D50
BB  41  BB  30  BA  FD  BA  F8  BA  E5  BA  8D  BA  79  BA  47  --  0B0D60
BD  21  BD  07  BC  C7  BC  C2  BC  AC  BC  4E  BC  2E  BB  46  --  0B0D70
BF  BF  BF  7C  BF  48  BF  43  BF  08  BE  F4  BE  69  BD  26  --  0B0D80
CA  B2  C1  F6  C0  B3  C0  AE  C0  94  C0  54  C0  4F  C0  02  --  0B0D90
C2  99  CA  CE  CA  CA  CA  C6  CA  C2  CA  BE  CA  BA  CA  B6  --  0B0DA0
C3  98  C3  8E  C3  7C  C3  52  C3  44  C2  EF  C2  B3  C2  A3  --  0B0DB0
CA  E6  CA  E2  CA  DE  CA  DA  CA  D6  CA  D2  C3  D3  C3  A8  --  0B0DC0
CB  06  CB  02  CA  FE  CA  FA  CA  F6  CA  F2  CA  EE  CA  EA  --  0B0DD0
CB  26  CB  22  CB  1E  CB  1A  CB  16  CB  12  CB  0E  CB  0A  --  0B0DE0
C6  29  C6  06  C5  CF  C5  9C  C5  49  C4  F6  C4  6B  C4  54  --  0B0DF0
C7  FA  C7  AE  C7  92  C7  66  C7  42  C7  1E  C6  59  01  FE  --  0B0E00
CB  2E  CB  2A  C8  D2  C8  98  C8  6A  C8  59  C8  3D  C8  16  --  0B0E10
DD  1E  DD  1A  DD  16  C9  ED  C9  D1  CB  3A  CB  36  CB  32  --  0B0E20
DD  26  DD  22  CC  5A  CC  30  CC  06  CB  DC  CB  B2  CB  88  --  0B0E30
CC  E2  DD  42  DD  3E  DD  3A  DD  36  DD  32  DD  2E  DD  2A  --  0B0E40
DD  46  CD  91  CD  5B  CD  4C  CD  40  CD  36  CD  26  CD  1E  --  0B0E50
CE  25  CD  C8  CD  AD  CD  A8  CD  A3  DD  52  DD  4E  DD  4A  --  0B0E60
DD  60  DD  5A  DD  56  CE  D7  CE  C8  CE  B9  CE  A9  CE  A1  --  0B0E70
CF  88  CF  74  CF  65  CF  35  CF  19  CE  F7  CE  F2  CE  E9  --  0B0E80
D0  85  D0  76  D0  67  D0  34  D0  2A  D0  1A  D0  12  CF  D0  --  0B0E90
D0  CA  D0  C5  D0  C0  D0  AE  D0  A9  D0  A4  DD  70  DD  6C  --  0B0EA0
D1  F4  D1  EA  D1  DA  D1  8D  D1  88  D1  6A  D1  28  D0  EC  --  0B0EB0
DD  86  DD  82  DD  7C  DD  78  DD  74  D2  45  D2  36  D2  27  --  0B0EC0
D2  E5  D2  E0  D2  AC  D2  8B  D2  86  DD  92  DD  8E  DD  8A  --  0B0ED0
D5  0F  D4  F4  D4  C1  D4  AE  D4  8E  D4  6E  D4  00  D3  CA  --  0B0EE0
D6  34  D5  B5  D5  B0  D5  A7  D5  70  D5  5D  D5  43  D5  29  --  0B0EF0
D7  20  D6  CE  DD  AC  DD  A8  D6  B4  D6  AA  D6  9A  D6  45  --  0B0F00
DD  B8  DD  B4  DD  B0  D7  89  D7  7D  D7  75  D7  40  D7  3B  --  0B0F10

D9  34  D9  24  D8  F3  DD  BC  D8  57  D8  39  D8  29  D7  FB  --  0B0F20
```

```
DA 60 DA 30 DA 2B DA 10 D9 D9 D9 B6 D9 A6 D9 3E -- 0B0F30
DA A1 DA 8A DD D0 DD CC DD C8 DD C4 DD C0 DA 68 -- 0B0F40
DB B9 DB A7 DB 8C DB 54 DB 32 DB 0E DA EA DA C6 -- 0B0F50
32 0C 32 08 32 04 32 00 DC 67 DC 5C DC 40 DC 38 -- 0B0F60
1A FD 32 24 32 20 32 1C 32 18 32 14 32 10 1A D8 -- 0B0F70
1B 73 32 34 32 30 32 2C 32 28 1B 3C 1B 1F 1B 0F -- 0B0F80
1C 0E 1B F4 1B CF 1B A0 1B 9B 1B 8A 1B 85 1B 7D -- 0B0F90
1C 39 32 60 32 5C 32 58 32 54 32 50 32 4C 32 38 -- 0B0FA0
1D 5A 1D 21 32 68 32 64 1C F5 1C E7 1C B4 1C 72 -- 0B0FB0
1E 9C 1E 7B 1E 5B 32 6C 1E 25 1D DD 1D CF 1D 9C -- 0B0FC0
1F 56 1F 51 1F 45 1F 0B 1F 06 1E F7 1E F2 1E E6 -- 0B0FD0
1F CA 1F BF 1F B0 1F A1 1F 92 1F 7D 1F 6A 1F 65 -- 0B0FE0
20 28 20 15 20 10 20 05 1F F2 1F ED 1F E2 1F CF -- 0B0FF0
32 70 21 00 20 F8 20 D5 20 CD 20 38 20 33 01 FE -- 0B1000
32 90 32 8C 32 88 32 84 32 80 32 7C 32 78 32 74 -- 0B1010
21 2D 32 AC 32 A8 32 A4 32 A0 32 9C 32 98 32 94 -- 0B1020
22 80 22 5F 22 55 22 08 21 EA 21 BF 21 8D 21 49 -- 0B1030
23 48 23 2A 32 B0 22 F8 22 DA 22 B0 22 97 22 88 -- 0B1040
24 8E 24 72 24 44 24 28 23 F5 23 AF 23 93 23 64 -- 0B1050
32 C0 32 BC 32 B8 32 B4 25 00 24 F6 24 DA 24 A1 -- 0B1060
32 D4 32 D0 32 CC 32 C8 32 C4 25 77 25 55 25 38 -- 0B1070
25 EC 32 F0 32 EC 32 E8 32 E4 32 E0 32 DC 32 D8 -- 0B1080
26 DC 26 B4 26 86 26 39 26 25 26 0E 25 FF 25 FA -- 0B1090
27 71 27 69 27 60 27 58 27 0F 26 F7 26 F2 26 ED -- 0B10A0
33 04 33 00 32 FC 32 F8 32 F4 27 AA 27 96 27 76 -- 0B10B0
29 6E 29 66 29 2C 29 0D 28 FA 28 E7 28 D4 33 08 -- 0B10C0
2A 3A 2A 26 2A 0A 29 DE 29 C8 29 C0 29 86 29 78 -- 0B10D0
2B 0A 2B 05 2A F4 2A EF 2A C1 2A 94 2A 5D 2A 4F -- 0B10E0
2B 6E 2B 69 2B 58 2B 53 2B 3B 2B 36 2B 24 2B 1F -- 0B10F0
2C D3 33 0C 2C 73 2B FC 2B 9F 2B 9A 2B 88 2B 83 -- 0B1100
2D 1E 2D 16 2D 0D 2C FA 2C F3 2C EE 2C E6 2C DD -- 0B1110
30 7A 33 16 30 09 2E E2 33 10 2D 4C 2D 38 2D 23 -- 0B1120
31 5B 31 3C 31 2E 31 26 30 E6 30 D1 30 B1 30 91 -- 0B1130
76 C0 76 BC 76 B8 76 B4 76 B0 31 DA 31 B4 31 85 -- 0B1140
76 E0 76 DC 76 D8 76 D4 76 D0 76 CC 76 C8 76 C4 -- 0B1150
77 00 76 FC 76 F8 76 F4 76 F0 76 EC 76 E8 76 E4 -- 0B1160
77 20 77 1C 77 18 77 14 77 10 77 0C 77 08 77 04 -- 0B1170
77 40 77 3C 77 38 77 34 77 30 77 2C 77 28 77 24 -- 0B1180
62 5C 62 2D 77 58 77 54 77 50 77 4C 77 48 77 44 -- 0B1190
64 11 63 DF 63 C4 63 A3 63 91 63 16 62 E8 62 84 -- 0B11A0
64 E9 64 D7 64 BE 64 98 64 77 64 65 64 4C 64 2F -- 0B11B0
65 EE 65 C0 65 BB 65 B6 65 33 65 1A 65 00 64 F1 -- 0B11C0
67 0C 66 F4 66 D1 66 B9 66 9C 66 4C 66 1B 65 F6 -- 0B11D0
77 64 77 60 77 5C 67 61 67 4E 67 40 67 26 67 21 -- 0B11E0
77 84 77 80 77 7C 77 78 77 74 77 70 77 6C 77 68 -- 0B11F0
77 A0 77 9C 77 98 77 94 77 90 77 8C 77 88 01 FE -- 0B1200
77 C0 77 BC 77 B8 77 B4 77 B0 77 AC 77 A8 77 A4 -- 0B1210
68 8D 68 6B 68 49 68 27 67 B9 77 CC 77 C8 77 C4 -- 0B1220
6A 66 6A 54 6A 3B 69 34 69 13 68 F2 68 D1 68 AF -- 0B1230
6C 52 6C 44 6C 0B 6B FA 6B B2 6B 74 6B 1F 6A C8 -- 0B1240
6D 26 6D 14 6C FA 6C CB 6C A3 6C 93 6C 88 6C 6E -- 0B1250
6D E6 77 D0 6D B2 6D AD 6D 8E 6D 7F 6D 69 6D 57 -- 0B1260
6F 19 6E F1 6E CE 6E B0 6E 68 6E 4A 6E 07 6D FA -- 0B1270
70 9A 70 5D 70 2C 70 10 70 05 77 D4 6F 99 6F 7B -- 0B1280
77 EC 77 E8 77 E4 77 E0 77 DC 71 14 70 D0 77 D8 -- 0B1290
78 0C 78 08 78 04 78 00 77 FC 77 F8 77 F4 77 F0 -- 0B12A0
78 2C 78 28 78 24 78 20 78 1C 78 18 78 14 78 10 -- 0B12B0

78 4C 78 48 78 44 78 40 78 3C 78 38 78 34 78 30 -- 0B12C0
78 6C 78 68 78 64 78 60 78 5C 78 58 78 54 78 50 -- 0B12D0
```

```
72 14 71 E1 71 C3 71 A5 71 7C 71 5D 71 3F 78 70 -- 0B12E0
74 5B 74 4C 74 2E 73 F4 73 D5 73 8A 73 6D 73 18 -- 0B12F0
75 62 75 33 75 1A 75 01 74 E8 74 DB 74 BD 74 92 -- 0B1300
76 14 75 E4 75 CB 75 BC 78 78 78 74 75 89 75 74 -- 0B1310
58 96 00 9C 00 0C 76 A5 76 98 76 7C 76 6A 76 31 -- 0B1320
58 B6 58 B2 58 AE 58 AA 58 A6 58 A2 58 9E 58 9A -- 0B1330
58 BA 50 F0 50 CB 50 C6 50 B5 50 A4 50 9F 50 97 -- 0B1340
51 35 58 D6 58 D2 58 CE 58 CA 58 C6 58 C2 58 BE -- 0B1350
52 50 52 2B 52 0B 51 FC 51 E9 51 CA 51 7D 51 64 -- 0B1360
53 A6 52 E3 52 BD 58 DA 52 82 52 7D 52 78 52 70 -- 0B1370
55 33 55 17 58 E6 54 C6 54 C1 54 A1 53 CB 53 C6 -- 0B1380
58 F4 58 F0 55 C3 55 B4 55 91 55 8C 55 84 58 EA -- 0B1390
56 CA 56 B9 56 91 56 6D 56 54 56 18 55 EA 58 F8 -- 0B13A0
57 F5 57 B1 57 85 57 76 57 62 57 30 57 13 57 02 -- 0B13B0
2C 62 00 28 00 0D 58 8A 58 5A 58 55 58 50 58 48 -- 0B13C0
2B D0 2B 6A 2B 2B 2B 18 2C 6A 2A AB 2A 76 2C 66 -- 0B13D0
4A 54 4A CA 4A C6 4A C2 4A BE 4A BA 2C 52 2C 1B -- 0B13E0
B5 80 B5 7C B5 78 06 A8 00 03 4A B1 4A 9E 4A 6D -- 0B13F0
B5 9C B5 98 B5 94 B5 90 B5 8C B5 88 B5 84 01 FE -- 0B1400
B5 BC B5 B8 B5 B4 B5 B0 B5 AC B5 A8 B5 A4 B5 A0 -- 0B1410
B5 DC B5 D8 B5 D4 B5 D0 B5 CC B5 C8 B5 C4 B5 C0 -- 0B1420
B5 FC B5 F8 B5 F4 B5 F0 B5 EC B5 E8 B5 E4 B5 E0 -- 0B1430
B6 1C B6 18 B6 14 B6 10 B6 0C B6 08 B6 04 B6 00 -- 0B1440
B6 3C B6 38 B6 34 B6 30 B6 2C B6 28 B6 24 B6 20 -- 0B1450
65 30 65 18 64 FE 64 E1 64 D9 64 AA 64 92 B6 40 -- 0B1460
66 B0 66 97 66 7B 66 5A 66 2D 65 D7 65 B0 65 81 -- 0B1470
67 99 67 7D 67 6B 67 52 67 3B 67 03 66 EA 66 CE -- 0B1480
68 75 68 62 68 3A 68 08 67 F6 67 EE 67 C7 67 AB -- 0B1490
69 73 B6 44 69 4C 69 30 69 25 69 20 69 18 66 FF -- 0B14A0
B6 64 B6 60 B6 5C B6 58 B6 54 B6 50 B6 4C B6 48 -- 0B14B0
B6 84 B6 80 B6 7C B6 78 B6 74 B6 70 B6 6C B6 68 -- 0B14C0
B6 A4 B6 A0 B6 9C B6 98 B6 94 B6 90 B6 8C B6 88 -- 0B14D0
6A 62 6A 4B 6A 1E 6A 0A 69 E8 69 C2 69 B0 B6 A8 -- 0B14E0
6B DE 6B 78 6B 69 6B 51 6A FF 6A DA 6A B9 6A 9D -- 0B14F0
B6 C4 B6 C0 B6 BC B6 B8 B6 B4 B6 B0 B6 AC 6C 16 -- 0B1500
B6 E4 B6 E0 B6 DC B6 D8 B6 D4 B6 D0 B6 CC B6 C8 -- 0B1510
B7 06 B7 02 B6 FE B6 FA B6 F6 B6 F2 B6 EC B6 E8 -- 0B1520
B7 26 B7 22 B7 1E B7 1A B7 16 B7 12 B7 0E B7 0A -- 0B1530
6C CF 6C 7C B7 4E B7 4A B7 46 B7 3A B7 2E B7 2A -- 0B1540
6F 39 6F 01 6D 34 6D 2C 6D 22 6D 0C 6C F2 6C E2 -- 0B1550
70 55 6F ED 6F E8 6F BE 6F B9 6F 6D 6F 68 6F 3E -- 0B1560
71 96 71 74 71 1F 71 10 70 E6 70 C0 70 B1 70 91 -- 0B1570
72 EB 72 C6 72 9C 72 77 72 2A 71 F3 71 C6 71 AA -- 0B1580
74 EC 74 8C 74 79 74 27 73 C1 73 96 73 6F 73 5A -- 0B1590
76 2B 76 23 76 07 75 F8 75 EB 75 DD 75 CF 74 F1 -- 0B15A0
B7 66 B7 62 B7 5E B7 5A B7 56 B7 52 76 5B 76 44 -- 0B15B0
77 8B 77 64 77 52 76 E2 76 BF 76 AB B7 6E B7 6A -- 0B15C0
B7 72 78 5A 78 35 78 10 77 FE 77 CD 77 9A 77 92 -- 0B15D0
79 91 78 A6 78 8F 78 82 B7 82 B7 7E B7 7A B7 76 -- 0B15E0
B7 8A B7 86 7A 58 7A 3A 7A 11 79 E4 79 C8 79 A5 -- 0B15F0
B7 A6 B7 A2 B7 9E B7 9A B7 96 B7 92 B7 8E 01 FE -- 0B1600
7B 75 7B 3F 7B 2B 7B 0F 7A BD 7A 88 7A 80 B7 AA -- 0B1610
B7 BA B7 B6 B7 B2 B7 AE 7C 1F 7B F8 7B D0 7B 9A -- 0B1620
7C E9 7C DF 7C C2 7C BD 7C A1 7C 81 7C 6D B7 BE -- 0B1630
B7 CE 7D B9 B7 CA 7D 89 B7 C6 7D 59 B7 C2 7D 29 -- 0B1640
B7 EE B7 EA B7 E6 B7 E2 B7 DE B7 DA B7 D6 B7 D2 -- 0B1650

7E 8D 7E 7A 7E 54 7E 1E 7D F6 B7 FA B7 F6 B7 F2 -- 0B1660
B7 FE 7F AD 7F 7C 7F 47 7F 20 7E D8 7E BC 7E AF -- 0B1670
80 1B 80 02 7F FA 7F E1 7F DC 7F D4 B8 06 B8 02 -- 0B1680
```

```
80 7B 80 54 B8 1E B8 1A B8 16 B8 12 B8 0E B8 0A -- 0B1690
81 B0 81 9F 81 7A 81 68 81 40 81 2D 81 18 80 FC -- 0B16A0
82 66 82 33 82 1B B8 26 B8 22 81 F3 81 CE 81 B5 -- 0B16B0
B8 3E B8 3A B8 36 B8 32 82 BC 82 91 B8 2E B8 2A -- 0B16C0
83 A2 83 82 83 70 B8 52 B8 4E B8 4A B8 46 B8 42 -- 0B16D0
84 7F 84 5D 84 55 84 34 84 21 83 FC 83 DD 83 C1 -- 0B16E0
85 3B 84 D4 B8 60 B8 5A B8 56 84 A5 84 8C 84 87 -- 0B16F0
86 3E B8 82 B8 7E B8 7A B8 76 85 C1 85 7C 85 77 -- 0B1700
87 93 87 8E 87 64 87 22 86 F6 86 84 86 6B 86 66 -- 0B1710
88 A9 88 4E 88 49 88 35 88 30 88 06 87 AC 87 A7 -- 0B1720
B8 8E B8 8A B8 86 89 25 88 F1 88 EC 88 D8 88 D3 -- 0B1730
8A 90 8A 70 8A 4F 89 55 B8 B2 B8 AE B8 A6 B8 92 -- 0B1740
B8 BA B8 B6 8B C4 8B 99 8B 7B 8B 34 8A C1 8A AE -- 0B1750
B8 C6 8E 22 8D 92 8D 6A 8D 04 8B F5 B8 C2 B8 BE -- 0B1760
8F 87 8E E1 8E C8 8E C3 8E 9B B8 D2 B8 CE B8 CA -- 0B1770
90 8B 90 5A 90 55 90 2B 8F F8 8F F3 8F C9 8F AB -- 0B1780
B8 DA B8 D6 91 5F 91 03 90 FE 90 EF 90 BA 90 B5 -- 0B1790
B8 FA B8 F6 B8 F2 B8 EE B8 EA B8 E6 B8 E2 B8 DE -- 0B17A0
92 AA 92 8B 92 63 92 39 91 FD 91 E5 91 BF 91 9C -- 0B17B0
B9 0A B9 06 B9 02 B8 FE 94 03 93 E1 93 9D 93 0F -- 0B17C0
95 3F 95 04 94 F1 94 C9 94 59 94 36 94 2E B9 0E -- 0B17D0
B9 2A B9 26 B9 22 B9 1E B9 1A B9 16 B9 12 95 70 -- 0B17E0
95 C8 95 C0 95 A7 95 9F B9 42 B9 3E B9 3A B9 2E -- 0B17F0
96 36 96 27 96 1A 96 0D 96 00 95 E9 95 E1 01 FE -- 0B1800
97 3C 97 37 97 29 97 09 96 E9 96 C9 96 AB 96 9E -- 0B1810
98 11 97 FE 97 D6 97 86 97 72 97 69 97 50 97 4B -- 0B1820
99 2D 98 89 B9 4E B9 4A B9 46 98 45 98 3D 98 19 -- 0B1830
B9 6A B9 66 B9 52 9A C4 9A AB 9A A3 9A 15 99 E3 -- 0B1840
9B 79 9B 5E 9B 4D 9B 15 9B 0B B9 76 B9 72 B9 6E -- 0B1850
9C B4 9C 70 9C 56 9C 33 9C 24 9B FB 9B CF 9B 91 -- 0B1860
9D 9A 9D 5A 9D 4B 9D 2A 9C E7 B9 82 B9 7E B9 7A -- 0B1870
9E 90 9E 8B 9D F5 9D C9 B9 92 B9 8E B9 8A B9 86 -- 0B1880
9F 2A 9F 22 B9 A6 B9 A2 B9 9E B9 9A B9 96 9E EF -- 0B1890
B9 AA A0 A6 A0 48 9F BE 9F 85 9F 5F 9F 34 9F 2F -- 0B18A0
B9 BA A1 9E B9 B6 A1 60 B9 B2 A1 22 B9 AE A0 E4 -- 0B18B0
B9 CA A2 7E A2 1D A2 13 B9 C6 B9 C2 B9 BE A1 DC -- 0B18C0
B9 DE B9 DA B9 D6 B9 D2 A3 20 A2 C8 A2 BE B9 CE -- 0B18D0
A4 20 A3 F0 A3 BC A3 68 A3 5B B9 EA B9 E6 B9 E2 -- 0B18E0
A4 B2 A4 96 A4 89 A4 6D A4 63 A4 54 A4 4A A4 2F -- 0B18F0
BA 02 B9 FE B9 FA B9 F6 A5 26 A4 E0 B9 F2 B9 EE -- 0B1900
A6 03 A5 9D A5 82 A5 7A A5 5B A5 4E BA 0A BA 06 -- 0B1910
BA 0E A6 CD A6 B5 A6 99 A6 80 A6 78 A6 44 A6 24 -- 0B1920
A7 E9 A7 C4 A7 62 A7 12 BA 1E BA 1A BA 16 BA 12 -- 0B1930
BA 32 BA 2E BA 2A BA 26 BA 22 A8 45 A8 17 A7 FC -- 0B1940
BA 3A BA 36 A9 32 A9 0D A8 DA A8 B3 A8 99 A8 73 -- 0B1950
A9 C6 A9 A1 A9 88 A9 5D BA 4A BA 46 BA 42 BA 3E -- 0B1960
BA 5A BA 56 BA 52 BA 4E AA 3C AA 20 A9 FB A9 E2 -- 0B1970
BA 7A BA 76 BA 72 BA 6E BA 6A BA 66 BA 62 BA 5E -- 0B1980
BA 9A BA 96 BA 92 BA 8E BA 8A BA 86 BA 82 BA 7E -- 0B1990
BA BA BA B6 BA B2 BA AE BA AA BA A6 BA A2 BA 9E -- 0B19A0
BA DA BA D6 BA D2 BA CE BA CA BA C6 BA C2 BA BE -- 0B19B0
AA A7 AA 93 AA 55 BA EE BA EA BA E6 BA E2 BA DE -- 0B19C0
AB 92 AB 80 AB 67 AB 4B AB 1D AA F1 AA DE AA CC -- 0B19D0
AC 37 AC 32 AC 2A AC 0E AB F5 AB D9 AB C7 AB AE -- 0B19E0
AD C0 AD AE AD 86 AD 64 AD 3C AC A5 AC 87 AC 50 -- 0B19F0

AE C7 AE 98 AE 8A AE 55 AE 39 AE 1E AD EC 01 FE -- 0B1A00
AF 9F AF 97 AF 7E AF 76 AF 43 AF 1D AE FF AE CF -- 0B1A10
B0 A3 B0 6E B0 60 B0 41 B0 15 AF F7 AF D5 AF CD -- 0B1A20
BB 06 BB 02 BA FE BA FA BA F6 BA F2 B0 C1 B0 A8 -- 0B1A30
```

```
BB 16 B1 D0 B1 78 B1 11 B0 E9 BB 12 BB 0E BB 0A -- 0B1A40
B2 3A B2 28 B2 0C B1 FA BB 26 BB 22 BB 1E BB 1A -- 0B1A50
BB 32 BB 2E BB 2A B2 BA B2 9E B2 93 B2 77 B2 56 -- 0B1A60
BB 3E BB 3A BB 36 B3 51 B3 2C B3 1A B2 F2 B2 E8 -- 0B1A70
BB 4A BB 46 B3 F6 B3 DA B3 D0 B3 A4 B3 78 BB 42 -- 0B1A80
B4 85 B4 69 B4 21 BB 5E BB 5A BB 56 BB 52 BB 4E -- 0B1A90
B9 9A 00 B4 00 0B B5 64 B5 38 B4 E9 B4 C8 B4 A3 -- 0B1AA0
B9 BC B9 B8 B9 B4 B9 B0 B9 AC B9 A8 B9 A4 B9 9E -- 0B1AB0
AF 0A AE 81 AE 61 AE 3B AE 2D B9 C8 B9 C4 B9 C0 -- 0B1AC0
B0 78 B0 51 B0 35 B0 0C AF BF AF 93 AF 6C AF 50 -- 0B1AD0
B9 DC B9 D8 B9 D4 B9 D0 B9 CC B0 F5 B0 D9 B0 C8 -- 0B1AE0
B9 FC B9 F8 B9 F4 B9 F0 B9 EC B9 E8 B9 E4 B9 E0 -- 0B1AF0
BA 1C BA 18 BA 14 BA 10 BA 0C BA 08 BA 04 BA 00 -- 0B1B00
BA 3C BA 38 BA 34 BA 30 BA 2C BA 28 BA 24 BA 20 -- 0B1B10
B3 1F B3 01 B2 95 B1 B2 B1 87 B1 5D B1 45 BA 40 -- 0B1B20
B5 DF B5 C5 B3 F8 B3 D0 B3 AF B3 83 B3 5B B3 3D -- 0B1B30
B7 EF B7 97 B7 5B B6 F7 B6 C3 B6 A9 B6 8F B5 F9 -- 0B1B40
B9 70 B9 62 B9 1E B9 00 B8 D8 B8 93 B8 6B B8 23 -- 0B1B50
FF 6F FF 07 FE F1 FC A6 FC A2 00 0C 00 0C B9 8C -- 0B1B60
92 84 92 80 92 7C 92 78 92 74 01 1E 00 0B FF 85 -- 0B1B70
92 A4 92 A0 92 9C 92 98 92 94 92 90 92 8C 92 88 -- 0B1B80
92 C4 92 C0 92 BC 92 B8 92 B4 92 B0 92 AC 92 A8 -- 0B1B90
92 EC 92 E8 92 E4 92 E0 92 DC 92 D8 92 CC 92 C8 -- 0B1BA0
93 0C 93 08 93 04 93 00 92 FC 92 F8 92 F4 92 F0 -- 0B1BB0
86 D8 86 C5 86 4F 86 3D 93 1C 93 18 93 14 93 10 -- 0B1BC0
87 D6 87 B6 87 96 87 81 87 5C 87 4D 87 2A 86 E8 -- 0B1BD0
88 BB 88 81 88 6E 88 5C 88 3A 88 2B 88 08 87 EC -- 0B1BE0
8A 39 8A 23 8A 00 89 E3 89 BF 89 BA 89 A7 89 A2 -- 0B1BF0
8B AF 8B 95 8B 64 8B 4C 8A A5 8A 82 8A 64 01 FE -- 0B1C00
93 34 93 30 93 2C 93 28 93 24 93 20 8B F3 8B CE -- 0B1C10
93 54 93 50 93 4C 93 48 93 44 93 40 93 3C 93 38 -- 0B1C20
93 74 93 70 93 6C 93 68 93 64 93 60 93 5C 93 58 -- 0B1C30
8D 24 8D 00 8C AA 8C 34 93 84 93 80 93 7C 93 78 -- 0B1C40
8E 9C 8E 6A 8E 55 8D DF 8D B8 8D 72 8D 50 8D 3B -- 0B1C50
90 03 8F E5 8F B7 8F 90 8F 78 8F 1C 8E DD 8E C3 -- 0B1C60
90 5D 93 98 93 94 93 90 93 8C 93 88 90 36 90 1A -- 0B1C70
91 6A 93 A0 93 9C 91 42 91 21 91 0B 90 E1 90 C9 -- 0B1C80
8F EC 8F E8 8F E4 00 52 00 0C 92 66 91 A0 91 77 -- 0B1C90
90 1C 90 18 90 04 90 00 8F FC 8F F8 8F F4 8F F0 -- 0B1CA0
8A 05 89 F9 89 EC 89 C2 89 97 89 63 90 24 90 20 -- 0B1CB0
8A 71 8A 62 8A 53 8A 47 8A 3B 8A 2E 8A 1F 8A 10 -- 0B1CC0
8B C5 8B AB 8B 75 8B 2F 8A A5 8A 96 8A 8A 8A 7E -- 0B1CD0
00 B0 00 0B 8F D6 8F AC 8F 9D 8F 92 8F 86 8B E9 -- 0B1CE0
E9 90 E9 8C E9 88 E9 84 E9 80 E9 7C E9 78 E9 74 -- 0B1CF0
DF 2D DF 14 DE F8 DE E6 DE BB DE 88 E9 98 E9 94 -- 0B1D00
E2 06 E1 F7 E1 D1 E1 A1 E9 A0 E9 9C DF 65 DF 4C -- 0B1D10
E9 C0 E9 BC E9 B8 E9 B4 E9 B0 E9 AC E9 A8 E9 A4 -- 0B1D20
E9 F8 E9 F4 E9 F0 E9 EC E9 E8 E9 E4 E9 E0 E9 C4 -- 0B1D30
E4 74 E4 6F E4 36 E4 31 E3 95 E2 74 E2 2E E9 FC -- 0B1D40
E5 C2 E5 B3 E5 8E E5 55 E5 35 E5 05 E4 D5 E4 B5 -- 0B1D50
E6 58 E6 47 E6 36 E6 06 EA 08 EA 04 EA 00 E5 DE -- 0B1D60
E7 66 E6 FD E6 CB E6 98 EA 14 EA 10 EA 0C E6 71 -- 0B1D70
E8 08 E7 C0 E7 8D EA 28 EA 24 EA 20 EA 1C EA 18 -- 0B1D80
E9 66 E8 FD E8 CB E8 98 EA 34 EA 30 EA 2C E8 71 -- 0B1D90

21 F0 21 D3 23 D2 23 CE 23 CA 23 C6 00 38 00 0D -- 0B1DA0
23 EE 23 EA 23 E6 23 E2 23 DE 23 DA 23 D6 22 0C -- 0B1DB0
23 2B 23 12 22 F1 22 D8 22 C1 23 FA 23 F6 23 F2 -- 0B1DC0
00 22 00 0C 23 BB 23 A2 23 8B 23 FE 23 65 23 4C -- 0B1DD0
DF 60 DD 22 DF 5C DF 58 DC 34 DF 54 DF 4E DF 4A -- 0B1DE0
```

781

```
DE  C1  DE  66  DE  OB  DF  74  DF  70  DF  6C  DF  68  DF  64  --  OB1DFO
D1  EA  D1  E6  D1  E2  D1  DE  01  A4  00  OB  DF  3C  01  FE  --  OB1E00
D2  OA  D2  06  D2  02  D1  FE  D1  FA  D1  F6  D1  F2  D1  EE  --  OB1E10
C7  51  C7  2D  C7  1B  D2  1E  D2  1A  D2  16  D2  12  D2  OE  --  OB1E20
C8  3D  C8  09  C7  FA  C7  DB  C7  CA  C7  AB  C7  89  C7  6A  --  OB1E30
C9  2D  C9  25  C9  OD  C8  BF  C8  B1  C8  92  C8  8D  C8  70  --  OB1E40
D2  3A  D2  36  D2  32  D2  2E  D2  2A  D2  26  D2  22  C9  3B  --  OB1E50
D2  5A  D2  56  D2  52  D2  4E  D2  4A  D2  46  D2  42  D2  3E  --  OB1E60
CA  BA  CA  96  CA  77  C9  AB  C9  86  D2  66  D2  62  D2  5E  --  OB1E70
CB  E8  CB  CO  CB  76  CB  55  CB  36  CB  OF  CA  F4  CA  D9  --  OB1E80
CD  88  CD  32  CD  1C  CC  EF  CC  9C  CC  91  CC  5B  CC  2C  --  OB1E90
CF  34  CE  E3  CE  79  CE  51  CE  2F  CD  EC  CD  CF  CD  B2  --  OB1EA0
D2  86  D2  82  D2  7E  D2  7A  D2  76  D2  72  D2  6E  D2  6A  --  OB1EBO
DO  76  DO  54  DO  2D  DO  1F  DO  00  CF  F9  CF  D6  CF  C4  --  OB1ECO
D1  56  D1  3D  D1  24  D1  05  DO  F3  DO  DB  DO  B3  DO  95  --  OB1EDO
D2  E1  DE  2A  DE  26  D1  D3  D1  BA  D1  A1  D1  88  D1  6F  --  OB1EEO
DE  4A  DE  46  DE  42  DE  3E  DE  3A  DE  36  DE  32  DE  2E  --  OB1EFO
D3  E9  D3  D5  D3  CE  D3  AB  D3  6E  D3  56  D3  3D  D3  26  --  OB1F00
D4  DF  D4  D5  D4  9E  D4  7D  D4  69  D4  3B  D3  F7  D3  F2  --  OB1F10
DE  56  DE  52  DE  4E  D5  BA  D5  91  D6  25  D6  OF  DE  5E  DE  5A  --  OB1F30
D6  FO  D6  B4  D6  A1  D6  34  D6  25  D7  25  D7  1E  D7  14  D7  OF  --  OB1F40
D8  29  D8  22  DE  62  D7  36  D7  25  D7  1E  D7  14  D7  OF  --  OB1F40
D9  AA  D9  82  D9  7D  D9  78  D9  5C  D9  48  D9  2C  D9  00  --  OB1F50
DB  27  DB  OB  DA  DF  DA  76  DA  6F  DA  6A  DA  65  DA  10  --  OB1F60
DB  D7  DB  CA  DB  BD  DB  95  DB  90  DB  71  DB  4C  DB  3B  --  OB1F70
DD  03  DC  FE  DC  F6  DC  C4  DC  96  DC  76  DC  48  DB  DF  --  OB1F80
DD  A1  DD  80  DD  2F  DD  2A  DD  25  DD  20  DD  18  DD  08  --  OB1F90
03  E8  00  04  DE  16  DD  D4  DD  CF  DD  C7  DD  C2  DD  B5  --  OB1FAO
4E  DO  4E  CC  4E  C8  4E  C4  4E  CO  4E  BC  00  18  4E  B8  --  OB1FBO
4E  E4  4E  EO  4E  DC  4E  D8  01  4D  01  1E  00  C1  4E  D4  --  OB1FCO
03  13  02  DD  02  8B  02  50  02  25  01  E2  4E  EC  4E  E8  --  OB1FDO
04  1C  03  CC  03  B8  03  8B  03  77  03  4D  03  39  03  21  --  OB1FEO
4E  FO  05  4C  05  36  04  F6  04  D4  04  85  04  69  04  2C  --  OB1FFO
06  E2  4F  00  4E  FC  06  4C  05  FD  4E  F8  4E  F4  01  FE  --  0B2000
4F  08  4F  04  08  15  08  08  07  F4  07  BD  07  BO  07  28  --  0B2010
09  50  4F  14  08  CD  08  96  08  7C  08  45  4F  10  4F  OC  --  0B2020
4F  34  4F  30  4F  2C  4F  28  4F  24  4F  20  4F  1C  4F  18  --  0B2030
OC  A9  OC  84  OC  61  OB  CF  OB  AC  OA  F9  OA  A5  OA  15  --  0B2040
4F  38  OD  CF  OD  C6  OD  5B  OD  28  OD  01  OC  E7  OC  BA  --  0B2050
4F  58  4F  54  4F  50  4F  4C  4F  48  4F  44  4F  40  4F  3C  --  0B2060
OF  5D  OE  6F  4F  88  4F  84  4F  68  4F  64  4F  60  4F  5C  --  0B2070
11  42  11  39  11  30  11  27  11  1E  10  4A  OF  AE  OF  9A  --  0B2080
13  77  13  3C  13  2C  12  16  12  00  11  E9  11  AF  11  47  --  0B2090
4F  A4  4F  AO  13  DA  4F  9C  4F  98  4F  94  4F  90  4F  8C  --  0B20A0
15  AA  15  87  15  76  15  61  14  C8  4F  BO  4F  AC  4F  A8  --  0B20B0
16  9C  16  84  16  68  16  45  16  30  16  15  15  DE  15  C6  --  0B20CO
17  DE  17  DO  17  B1  17  65  17  19  16  C5  16  B7  16  A9  --  0B20DO
19  D3  4F  B8  18  F7  18  A4  4F  B4  18  2E  17  FA  17  EC  --  0B20EO
1C  13  1B  A5  1B  77  1B  67  1B  29  1B  1C  1A  35  1A  04  --  0B20FO
4F  CO  1D  EB  1D  BC  1D  67  1D  35  1C  ED  4F  BC  1C  AO  --  0B2100
4F  EO  4F  DC  4F  D8  4F  D4  4F  DO  4F  CC  4F  C8  4F  C4  --  0B2110
50  00  4F  FC  4F  F8  4F  F4  4F  FO  4F  EC  4F  E8  4F  E4  --  0B2120
20  89  20  66  1F  FA  1F  DC  1F  B9  1F  54  1F  36  1E  FF  --  0B2130

23  BF  23  A1  23  6C  23  44  22  6D  21  F4  21  4E  21  1D  --  0B2140
25  E1  25  C3  25  98  25  55  25  32  24  7C  23  F1  23  DD  --  0B2150
27  7F  27  1F  27  01  26  77  26  59  26  3B  26  1D  25  FF  --  0B2160
50  04  28  60  28  42  28  24  28  06  27  E8  27  CA  27  A7  --  0B2170
29  A7  29  59  29  2B  28  FA  50  1C  50  10  50  OC  50  08  --  0B2180
2A  BD  2A  92  2A  74  2A  11  29  D1  29  C2  29  B9  29  BO  --  0B2190
```

```
2B D5 2B A4 2B 44 2B 27 2A E7 2A D8 2A CF 2A C6 -- 0B21A0
2D 44 2D 26 2C C3 2C 78 2C 4A 2C 36 2C 1D 2C 09 -- 0B21B0
2F 77 2F 38 2E F1 2E 8C 2E 6A 2D DA 2D B3 2D 68 -- 0B21C0
30 7F 30 66 30 4D 30 48 30 22 30 1D 2F A7 2F 8B -- 0B21D0
31 36 30 FE 30 F9 30 D6 30 D1 30 AC 30 A7 30 84 -- 0B21E0
32 A3 32 89 32 74 32 44 32 20 31 F4 31 93 31 3B -- 0B21F0
33 96 33 76 33 5D 33 35 33 18 32 F2 32 C9 01 FE -- 0B2200
34 F8 34 A3 34 7E 34 47 34 15 34 01 33 D9 33 BC -- 0B2210
35 DD 35 C7 35 7A 35 69 35 46 35 2E 35 1A 35 09 -- 0B2220
37 A3 37 64 37 39 36 B2 36 5E 36 49 36 22 35 F2 -- 0B2230
39 4F 39 06 38 D6 38 A0 38 86 38 3F 38 11 37 D5 -- 0B2240
3A 17 3A 12 39 F9 39 E0 39 D4 39 BA 39 A0 39 69 -- 0B2250
3B 6E 3B 69 3B 5E 3B 52 3B 46 3B 18 3B 13 3A 90 -- 0B2260
3D A1 3C 5B 3B CA 3B A9 3B A4 3B 98 3B 8C 3B 80 -- 0B2270
3E 90 3E 81 3E 72 3E 2D 3E 11 3D F2 3D D4 3D BF -- 0B2280
3F D2 3F AC 3F 85 3F 6C 3F 11 3E FD 3E F8 3E 9F -- 0B2290
40 A4 40 9F 40 96 40 8B 40 7F 40 7A 40 71 3F FA -- 0B22A0
40 FF 40 F4 40 E8 40 E3 40 DA 40 C0 40 BB 40 B2 -- 0B22B0
41 99 41 94 41 8B 41 29 41 24 41 1B 41 0D 41 08 -- 0B22C0
41 ED 41 DA 41 D5 41 CC 41 BE 41 B9 41 B0 41 A5 -- 0B22D0
43 01 42 E9 42 C5 42 8D 42 4F 42 4A 42 08 41 F2 -- 0B22E0
44 80 44 74 44 69 44 5D 44 01 43 D6 43 AF 43 4C -- 0B22F0
45 42 45 1C 44 F7 44 F2 44 E1 44 BB 44 90 44 8B -- 0B2300
46 5C 46 57 46 4E 46 45 46 3A 46 2E 45 58 45 53 -- 0B2310
47 81 47 59 47 39 47 13 46 F4 46 CC 46 AF 46 89 -- 0B2320
48 6E 48 54 48 3B 48 0E 47 F5 47 DB 47 B0 47 96 -- 0B2330
4A 33 4A 18 4A 13 4A 00 49 7D 49 63 48 F9 48 DF -- 0B2340
4B 1F 4A FF 4A E5 4A BA 4A 8C 4A 71 4A 6C 4A 5A -- 0B2350
4C 04 4B F9 4B ED 4B C9 4B B2 4B 9E 4B 8A 4B 39 -- 0B2360
4C A9 4C 9E 4C 92 4C 87 4C 7B 4C 20 4C 1B 4C 10 -- 0B2370
4D E5 4D 91 4D 5D 4D 2F 4D 16 4C F8 4C C8 4C AE -- 0B2380
01 F6 00 07 4E AD 4E 90 4E 71 4E 2D 4E 28 4E 0B -- 0B2390
2E C3 2E B4 2E AF 2E AA 2E A5 2E 94 5B CC 5B C8 -- 0B23A0
2E EE 2E D1 5B E4 5B E0 5B DC 5B D8 5B D4 5B D0 -- 0B23B0
5B E8 2F 81 2F 7C 2F 77 2F 6F 2F 6A 2F 4B 2F 03 -- 0B23C0
2F E0 2F CE 2F B8 5B F0 5B EC 2F AA 2F A5 2F A0 -- 0B23D0
5C 08 5B FC 5B F8 5B F4 30 48 30 43 30 3E 2F FF -- 0B23E0
31 A1 31 83 31 7E 31 75 31 11 30 CE 30 61 5C 0C -- 0B23F0
34 68 34 58 34 53 33 2C 32 CE 32 B2 32 4D 01 FE -- 0B2400
35 9A 35 86 35 72 35 62 35 5D 34 BC 34 90 34 7C -- 0B2410
39 66 38 CC 38 66 38 25 37 C3 36 E3 35 E1 35 D6 -- 0B2420
3A B6 3A A0 5C 10 3A 88 3A 83 3A 64 3A 22 39 8D -- 0B2430
5C 44 5C 20 5C 1C 5C 18 5C 14 3B 0F 3A FD 3A DD -- 0B2440
3C 90 3C 50 3C 3B 3C 36 3C 27 3B E1 3B B9 3B A8 -- 0B2450
3E E8 3E A6 3E 7C 3E 62 3E 49 3E 2F 3D 97 3C C3 -- 0B2460
42 7D 40 AB 40 A6 40 97 40 88 40 7F 40 76 40 2E -- 0B2470
43 71 43 65 43 5D 43 4B 5C 4C 5C 48 42 D8 42 B4 -- 0B2480
5C 60 5C 5C 5C 58 5C 54 5C 50 44 33 44 24 43 83 -- 0B2490
47 25 47 09 46 F7 46 DB 46 C9 5C 6C 5C 68 5C 64 -- 0B24A0
48 F4 48 D6 48 BB 48 9C 48 7A 47 65 47 53 47 37 -- 0B24B0
5C 7C 5C 78 4A 4D 5C 74 5C 70 4A 0F 49 D7 49 BD -- 0B24C0
4D 77 4C AF 5C 80 4B 90 4B 82 4B 6B 4B 63 4B 51 -- 0B24D0

50 66 50 55 50 29 4F E5 4E 97 4E 7E 4E 50 4D DE -- 0B24E0
52 2B 52 09 51 EF 51 CD 50 FA 50 EB 50 E4 50 D2 -- 0B24F0
52 BB 52 A9 52 9A 52 8B 52 79 52 67 52 58 52 49 -- 0B2500
53 F4 53 DF 53 A3 53 81 53 36 53 14 52 FA 52 E0 -- 0B2510
55 33 54 B3 54 A1 54 8F 54 7E 54 5E 54 3A 54 05 -- 0B2520
56 F6 56 8F 56 5F 56 2C 55 D7 55 AB 55 7A 55 38 -- 0B2530
57 46 57 41 57 33 57 2E 57 23 57 17 57 12 56 FB -- 0B2540
```

```
58 05 57 A4 57 9F 57 91 57 8C 57 81 57 75 57 70 -- 0B2550
59 7C 59 2B 58 FB 58 C8 58 9B 58 6F 58 3E 58 1C -- 0B2560
59 CC 59 C7 59 B9 59 B4 59 A9 59 9D 59 98 59 81 -- 0B2570
5A 87 5A 40 5A 3B 5A 2D 5A 28 5A 1D 5A 11 5A 0C -- 0B2580
C6 54 C6 50 00 94 00 0B 5B B2 5C 9C 5B 1A 5A D7 -- 0B2590
C6 74 C6 70 C6 6C C6 68 C6 64 C6 60 C6 5C C6 58 -- 0B25A0
BB 32 BB 2A BB 1A BB 15 BB 0D BA F2 BA D7 BA BC -- 0B25B0
BC 3B BC 03 BB E8 BB AA BB 8F BB 41 BB 3C BB 37 -- 0B25C0
BD 8A BD 68 BD 1F BC FD BC DB BC B3 BC 72 BC 54 -- 0B25D0
BF FE BF C1 BF 64 C6 84 C6 80 BE 39 BE 1A BD AC -- 0B25E0
C1 A1 C1 0E C1 07 C0 98 C0 7B C0 4C C0 2F C0 15 -- 0B25F0
C3 11 C2 F2 C2 ED C2 C7 C2 C2 C2 38 C1 CF 01 FE -- 0B2600
C3 B3 C3 AE C3 89 C3 84 C3 5C C3 57 C3 31 C3 2C -- 0B2610
C6 05 C5 9C C5 46 C4 75 C4 70 C4 68 C4 30 C3 CA -- 0B2620
16 AA 20 E2 20 DE 20 DA 20 D6 00 A6 00 0C C6 25 -- 0B2630
20 E6 17 5B 17 4D 17 41 17 21 17 0D 16 BC 16 B7 -- 0B2640
20 FA 17 F9 17 D1 20 F6 20 F2 20 EE 20 EA 17 7F -- 0B2650
18 98 18 90 18 7C 18 2A 18 25 18 20 21 02 20 FE -- 0B2660
19 44 19 21 19 13 18 F8 18 EA 18 CF 18 C1 18 A6 -- 0B2670
21 12 21 0E 21 0A 21 06 1A 02 19 DC 19 90 19 63 -- 0B2680
1C ED 1C C5 1C A8 1C 5C 1C 3D 21 1E 21 1A 21 16 -- 0B2690
1D CF 1D C4 1D B8 1D AC 1D A0 1D 2D 1D 13 1D 04 -- 0B26A0
1F 85 1F 80 1F 5C 1F 57 1E 28 1E 02 1D DF 1D DA -- 0B26B0
20 54 20 43 20 32 20 10 1F F3 1F D1 1F B6 1F B1 -- 0B26C0
00 10 00 0D 20 C5 20 B4 20 A3 20 92 20 76 20 65 -- 0B26D0
34 9B 34 13 33 FD 33 F8 33 CC 33 C7 33 A3 33 9E -- 0B26E0
4C 03 4B F4 4B E5 4B 7E 4B 79 4B 69 01 40 00 0A -- 0B26F0
4D A7 4D 97 4C BC 4C 7E 4C 56 4C 36 4C 24 4C 12 -- 0B2700
4F 9E 4F 7A 4F 58 4E F4 4E BC 4E 8D 4E 65 4D AC -- 0B2710
50 9C 50 86 50 70 50 57 50 41 50 16 4F EE 4F CE -- 0B2720
51 DB 51 AF 51 49 51 10 50 FA 50 DE 50 C8 50 B2 -- 0B2730
53 4E 53 0C 52 ED 52 8C 52 87 52 43 52 3E 52 2E -- 0B2740
54 D4 54 B7 54 15 53 E8 53 C2 53 A0 53 85 53 6D -- 0B2750
55 82 55 73 55 5E 55 41 55 2A 55 15 54 F8 54 E9 -- 0B2760
56 41 56 2C 56 0F 56 00 55 EB 55 CE 55 B4 55 9F -- 0B2770
57 3B 57 2C 56 DA 56 C5 56 A8 56 99 56 84 56 67 -- 0B2780
58 04 57 F5 57 95 57 86 57 77 57 68 57 59 57 4A -- 0B2790
58 85 58 76 58 67 58 55 58 46 58 37 58 25 58 13 -- 0B27A0
59 6A 59 44 58 DF 58 D0 58 C1 58 B2 58 A3 58 94 -- 0B27B0
5A 2A 5A 05 59 EF 59 D9 59 C3 59 AE 59 98 59 80 -- 0B27C0
5B 3C 5B 1D 5B 0B 5A F6 5A E7 5A 6B 5A 55 5A 40 -- 0B27D0
5C 68 5C 56 5C 44 5C 32 5C 1C 5B D4 5B 91 5B 60 -- 0B27E0
5D 0E 5C FD 5C EC 5C DB 5C CA 5C B9 5C 8C 5C 7A -- 0B27F0
5E 27 5D C8 5D C3 5D 7C 5D 57 5D 30 5D 1F 01 FE -- 0B2800
5F 88 5F 5B 5F 2D 5F 03 5E D5 5E AB 5E 7D 5E 53 -- 0B2810
61 05 60 BE 60 90 60 66 60 38 60 0E 5F E0 5F B6 -- 0B2820
F2 2C F2 28 F2 24 03 98 00 03 61 7C 61 50 61 31 -- 0B2830
F2 4C F2 48 F2 44 F2 40 F2 3C F2 38 F2 34 F2 30 -- 0B2840
BB 73 BB 6E F2 64 F2 60 F2 5C F2 58 F2 54 F2 50 -- 0B2850
F2 68 BC B1 BC A2 BC 9D BC 93 BC 72 BB 9C BB 82 -- 0B2860
BD 1F F2 84 F2 80 F2 7C F2 78 F2 74 F2 70 F2 6C -- 0B2870

F2 94 F2 90 F2 8C F2 88 BD A0 BD 87 BD 54 BD 3B -- 0B2880
F2 B4 F2 B0 F2 AC F2 A8 F2 A4 F2 A0 F2 9C F2 98 -- 0B2890
F2 D4 F2 D0 F2 CC F2 C8 F2 C4 F2 C0 F2 BC F2 B8 -- 0B28A0
BE 03 F2 F0 F2 EC F2 E8 F2 E4 F2 E0 F2 DC F2 D8 -- 0B28B0
F3 00 F2 FC F2 F8 F2 F4 BE B1 BE 99 BE 4A BE 31 -- 0B28C0
F3 08 C3 4B C3 44 C2 E8 C2 8D C2 20 C1 91 F3 04 -- 0B28D0
F3 28 F3 24 F3 20 F3 1C F3 18 F3 14 F3 10 F3 0C -- 0B28E0
F3 48 F3 44 F3 40 F3 3C F3 38 F3 34 F3 30 F3 2C -- 0B28F0
```

```
C3 DA C3 C1 C3 8C C3 87 F3 58 F3 54 F3 50 F3 4C -- 0B2900
C4 8D C4 88 C4 5C C4 57 C4 2B C4 26 C4 0F C4 0A -- 0B2910
F3 64 F3 60 F3 5C C5 58 C5 45 C5 0E C4 F5 C4 C7 -- 0B2920
C5 FC F3 80 F3 7C F3 78 F3 74 F3 70 F3 6C F3 68 -- 0B2930
C6 8E C6 6F C6 6A C6 4A C6 45 C6 26 C6 21 C6 01 -- 0B2940
C7 20 C7 01 C6 FC C6 DC C6 D7 C6 B8 C6 B3 C6 93 -- 0B2950
C7 B2 C7 93 C7 8E C7 6E C7 69 C7 4A C7 45 C7 25 -- 0B2960
C8 44 C8 25 C8 20 C8 00 C7 FB C7 DC C7 D7 C7 B7 -- 0B2970
C9 2B C8 B7 C8 B2 C8 92 C8 8D C8 6E C8 69 C8 49 -- 0B2980
F3 A8 F3 A4 F3 A0 F3 9C F3 98 F3 94 F3 90 F3 8C -- 0B2990
F3 C8 F3 C4 F3 C0 F3 BC F3 B8 F3 B4 F3 B0 F3 AC -- 0B29A0
CC 26 CB FA CB E1 CB 4F CB 36 CB 09 F3 D0 F3 CC -- 0B29B0
CD 72 CD 36 CD 1D CC CF CC B6 CC 81 CC 7C CC 3F -- 0B29C0
CE AC CE 84 CE 6B CE 2F CE 16 CD F8 CD DF CD 92 -- 0B29D0
F3 DC F3 D8 F3 D4 CF 4C CF 33 CE FA CE E1 CE C5 -- 0B29E0
CF A8 CF A3 F3 F4 F3 F0 F3 EC F3 E8 F3 E4 F3 E0 -- 0B29F0
D0 CC D0 6F D0 56 D0 21 D0 1C CF F6 CF DD 01 FE -- 0B2A00
D1 CC D1 C7 D1 AE D1 A9 D1 96 D1 76 D1 5D D0 E5 -- 0B2A10
D2 42 D2 3D D2 24 D2 1F D2 07 D2 02 D1 E9 D1 E4 -- 0B2A20
D2 FD D2 E4 D2 C6 D2 AD D2 7D D2 78 D2 5F D2 5A -- 0B2A30
D4 25 D4 0C D3 A8 D3 8F D3 39 F3 FC F3 F8 D3 05 -- 0B2A40
D5 AA D5 6E D5 55 D5 1C D5 03 D4 93 D4 52 D4 39 -- 0B2A50
D6 FE D6 C2 D6 A9 D6 6D D6 54 D6 18 D5 FF D5 C3 -- 0B2A60
D8 3E D8 25 D8 0C D7 9E D7 85 D7 4C D7 33 D7 17 -- 0B2A70
D9 57 D9 3E D9 05 D8 EC D8 C2 D8 84 D8 6B D8 57 -- 0B2A80
DA 87 DA 67 DA 33 DA 1A D9 E1 D9 C8 D9 AC D9 93 -- 0B2A90
DC 46 DC 1F DB F2 DB D9 DB 55 DB 41 DB 18 DA A0 -- 0B2AA0
DD 4D DD 34 DD 09 DC DC DC C3 DC A3 DC 8A DC 5F -- 0B2AB0
F4 0C F4 08 F4 04 F4 00 DD B1 DD 98 DD 84 DD 6B -- 0B2AC0
DE F5 DE A2 DE 99 DE 94 DE 36 DE 2F F4 14 F4 10 -- 0B2AD0
E0 54 E0 3B E0 36 E0 23 DF EC DF 70 DF 57 DF 0E -- 0B2AE0
E0 E2 E0 CE E0 B5 E0 94 E0 8F E0 76 E0 71 E0 59 -- 0B2AF0
E1 E7 E1 B5 E1 AC E1 A7 F4 24 F4 20 F4 18 E0 FB -- 0B2B00
E3 50 E3 15 E3 04 E2 DE E2 A3 E2 92 E2 6F E2 11 -- 0B2B10
E4 6F E4 3A E4 35 E4 0F E4 08 E3 A6 E3 5E E3 55 -- 0B2B20
E5 67 E5 4F E5 4A E5 31 E5 2C E5 19 E4 E2 E4 88 -- 0B2B30
E7 10 E6 F7 E5 D8 E5 C4 E5 AB E5 8A E5 85 E5 6C -- 0B2B40
E8 88 E8 5D E8 30 E8 17 E7 E0 E7 9B E7 87 E7 69 -- 0B2B50
F4 28 E9 42 E9 29 E9 05 E8 EC E8 D8 E8 BF E8 A1 -- 0B2B60
F4 32 EA AA EA A5 EA 7C EA 28 EA 15 EA 10 F4 2C -- 0B2B70
EB 81 EB 7C EB 5E EB 59 EB 44 EB 0F EB 06 EB 01 -- 0B2B80
EC D5 F4 52 F4 4E F4 4A F4 46 F4 42 F4 3E EB D5 -- 0B2B90
EF 7A EF 08 EE 92 EE 79 EE 26 EE 1D EE 18 ED 28 -- 0B2BA0
F0 3F F0 3A EF D1 F4 62 F4 5E F4 5A F4 56 EF 88 -- 0B2BB0
F1 C9 F1 B0 F1 4A F1 37 F1 32 F0 BD F0 5B F0 56 -- 0B2BC0
37 6A 37 66 37 62 37 5E 02 70 00 06 F2 19 F2 00 -- 0B2BD0
37 A2 37 96 37 8A 37 7E 37 7A 37 76 37 72 37 6E -- 0B2BE0
37 D2 37 CE 37 C2 37 BE 37 BA 37 B6 37 B2 37 AE -- 0B2BF0
37 F6 37 F2 37 EE 37 EA 37 E6 37 E2 37 DE 01 FE -- 0B2C00
38 1E 38 12 38 0E 38 0A 38 06 38 02 37 FE 37 FA -- 0B2C10

38 3E 38 3A 38 36 38 32 38 2E 38 2A 38 26 38 22 -- 0B2C20
03 EA 03 E5 03 CE 03 C9 03 69 00 87 00 3B 38 42 -- 0B2C30
38 4A 38 46 05 EF 05 E1 05 6F 05 2D 04 EB 04 20 -- 0B2C40
06 8C 06 64 06 44 06 1F 06 1A 06 12 38 52 38 4E -- 0B2C50
0C 31 0C 06 0B AA 0B 46 0A E2 38 5E 06 BC 06 AC -- 0B2C60
0D AB 0D 8B 0D 6C 0D 4D 0D 2E 0C 99 0C 81 0C 59 -- 0B2C70
0F 6E 0F 4F 0F 30 0E 9B 0E 83 0E 5B 0E 33 0E 08 -- 0B2C80
15 1A 13 92 13 8A 13 75 13 4D 11 11 11 0C 0F 8D -- 0B2C90
15 5E 15 59 15 50 15 47 15 3E 15 35 15 2C 15 23 -- 0B2CA0
```

785

```
17 34 17 2B 15 A3 15 9B 15 86 38 6A 38 66 38 62 -- 0B2CB0
17 B9 17 6F 17 6A 17 61 17 58 17 4F 17 46 17 3D -- 0B2CC0
19 DC 19 D4 19 BF 19 98 19 34 18 C7 18 64 17 EF -- 0B2CD0
1B 48 1B 3F 1B 36 1B 2D 1B 24 1B 1B 1B 12 1B 09 -- 0B2CE0
1C BD 1C A7 1C 79 1C 06 1B E3 1B AD 1B 77 1B 4D -- 0B2CF0
1D 80 1D 41 1D 3A 1D 2D 1D 0E 1C FB 1C E5 1C DC -- 0B2D00
1E 13 1D F4 1D E1 1D CC 1D C3 1D A4 1D 90 1D 89 -- 0B2D10
1E EF 1E E8 1E D6 1E 76 1E 6F 1E 66 1E 27 1E 20 -- 0B2D20
1F 58 1F 4F 1F 46 1F 3D 1F 34 1F 2B 1F 22 1F 19 -- 0B2D30
23 59 22 FF 21 75 20 DD 20 CB 20 16 1F 9B 1F 5D -- 0B2D40
27 3C 27 12 27 0B 26 F5 26 DF 26 C9 25 EB 24 E3 -- 0B2D50
27 80 27 7B 27 72 27 69 27 60 27 57 27 4E 27 45 -- 0B2D60
28 CA 28 B2 28 9E 28 88 28 4A 28 36 28 20 27 98 -- 0B2D70
29 33 29 2A 29 21 29 18 29 0F 29 06 28 FD 28 F4 -- 0B2D80
2A 6A 2A 56 2A 40 2A 02 29 EE 29 D8 29 50 29 38 -- 0B2D90
2A E2 2A D9 2A D0 2A C7 2A BE 2A B5 2A AC 2A 82 -- 0B2DA0
2C 9B 2C 43 2B FB 2B 62 2B 49 2B 12 2A F0 2A EB -- 0B2DB0
2D 04 2C FB 2C F2 2C E9 2C E0 2C D7 2C CE 2C C5 -- 0B2DC0
2E BB 2E AF 2E A5 2E 95 2E 8A 2E 3B 38 7E 2D 09 -- 0B2DD0
2F 21 2F 15 2F 0B 2E FA 2E EE 2E E2 2E D8 2E C7 -- 0B2DE0
2F AE 2F A4 2F 93 2F 87 2F 63 2F 48 2F 3E 2F 2D -- 0B2DF0
30 26 30 1D 30 0E 30 04 2F F3 2F E7 2F C1 01 FE -- 0B2E00
30 72 30 61 30 5C 30 53 30 4A 30 41 30 38 30 2F -- 0B2E10
33 52 33 28 33 17 32 D4 32 A1 32 77 32 63 31 6B -- 0B2E20
34 C2 34 98 34 87 34 44 34 11 33 E7 33 D3 33 85 -- 0B2E30
00 78 00 0C 37 52 36 27 36 08 35 C7 35 A0 34 F5 -- 0B2E40
81 A6 81 A2 81 9E 81 9A 81 96 81 92 81 8E 81 8A -- 0B2E50
7A EB 7A E6 7A D7 7A D2 7A AE 7A 8F 7A 48 81 AA -- 0B2E60
7C 57 7C 12 7B EB 7B D4 7B 5F 7B 52 7B 45 7B 17 -- 0B2E70
7D 84 7D 73 7D 52 7D 41 7D 13 7C F1 7C DC 7C 6B -- 0B2E80
7E 4C 7E 3B 7E 1A 7E 09 7D E8 7D D7 7D B6 7D A5 -- 0B2E90
7F D7 7F C6 7F A5 7F 94 7F 77 7F 63 7E EB 7E D7 -- 0B2EA0
80 9F 80 8E 80 6D 80 5C 80 3B 80 2A 80 09 7F F8 -- 0B2EB0
FE AC FE A8 00 EE 00 04 81 7F 81 4A 80 D1 80 C0 -- 0B2EC0
FE FC FE F8 FE F4 FE F0 FE EC FE E8 FE E4 FE B8 -- 0B2ED0
FF 1E FF 18 FF 14 FF 10 FF 0C FF 08 FF 04 FF 00 -- 0B2EE0
FF 2E FF 2A FF 26 EB 52 EA 8E EA 77 EA 2A E9 52 -- 0B2EF0
EB D8 EB B1 EB AC EB 96 EB 84 FF 4A FF 3E FF 32 -- 0B2F00
ED 4D ED 20 EC F3 EC 5C EC 3C EC 1C EB FC EB DD -- 0B2F10
EF B6 EF 96 EF 91 EE 66 EE 61 EE 50 EE 4B ED 7A -- 0B2F20
F1 2B F0 7F F0 4E F0 39 F0 34 EF FA EF F5 EF BB -- 0B2F30
F2 65 F2 60 F2 30 F2 2B F1 CF F1 CA F1 9A F1 95 -- 0B2F40
F2 D3 F2 CE F2 C3 F2 AA F2 A5 F2 8E F2 89 F2 7E -- 0B2F50
F3 D0 F3 CB F3 91 F3 8C F3 52 F3 4D F2 EF F2 EA -- 0B2F60
F7 C4 F5 65 F5 46 F5 23 F4 74 F4 56 F4 0F F4 0A -- 0B2F70
FA 3D FA 21 FA 0C F9 D0 F9 A8 F8 C8 F8 2A F8 1A -- 0B2F80
FC 47 FC 32 FB 89 FB 52 FB 12 FA F1 FA BD FA 7D -- 0B2F90
FD A6 FD 09 FD 04 FC F3 FC EE FC E2 FC 73 FC 5D -- 0B2FA0
3E 3C 00 8E 00 0C FE 9C FE 82 FE 12 FD F4 FD C4 -- 0B2FB0

3E 58 3E 54 3E 50 3E 4C 3E 48 3E 44 35 D3 3E 40 -- 0B2FC0
3E 78 3E 74 3E 70 3E 6C 3E 68 3E 64 3E 60 3E 5C -- 0B2FD0
36 71 36 54 36 37 36 16 35 FB 3E 84 3E 80 3E 7C -- 0B2FE0
37 65 37 29 37 0F 36 FA 36 E5 36 D0 36 BF 36 A3 -- 0B2FF0
39 18 38 FE 38 E1 38 38 38 17 37 E6 37 90 01 FE -- 0B3000
3A 25 3E 88 3A 07 39 ED 39 D3 39 B2 39 87 39 32 -- 0B3010
3B 0F 3A FA 3A E9 3A CD 3A 9B 3A 7E 3A 61 3A 40 -- 0B3020
3C 69 3C 54 3C 3C 3C 0F 3B EB 3B 97 3B 6C 3B 29 -- 0B3030
00 0A 3E 29 3E 08 3D DD 3D 8B 3D 6E 3C C1 3C A0 -- 0B3040
34 61 34 44 33 D4 33 A2 4A DE 4A DA 4A D6 01 2C -- 0B3050
```

```
4A E4 36 1A 35 DA 35 D5 35 8B 35 86 34 D2 34 A9 -- 0B3060
37 C8 37 71 37 6C 37 4D 37 48 37 29 37 24 36 DE -- 0B3070
39 3F 39 07 38 EE 38 D2 38 98 38 1D 37 E9 37 CD -- 0B3080
3A 23 3A 1E 39 FF 39 FA 39 B2 4A E8 39 7F 39 66 -- 0B3090
3B 90 3B 56 3A DB 3A A7 3A 8B 3A 86 3A 47 3A 42 -- 0B30A0
3C B0 3C A6 3C 80 3C 3D 3C 24 3B FD 3B C5 3B AC -- 0B30B0
3D 8D 3D 7E 3D 79 3D 6A 3D 65 3D 46 3D 41 3C E9 -- 0B30C0
3E 71 3E 3D 3E 38 3D F2 3D ED 3D A6 3D A1 3D 92 -- 0B30D0
3F 7D 3F 5B 3F 45 3F 40 3E F7 3E BD 3E 8E 3E 76 -- 0B30E0
40 9D 40 65 40 4C 40 2C 40 27 3F E0 3F B0 3F 82 -- 0B30F0
42 38 42 33 41 C6 41 AD 41 7B 41 49 41 2A 40 F8 -- 0B3100
44 22 44 1D 42 C4 42 BF 42 80 42 7B 42 5C 42 57 -- 0B3110
45 4D 45 48 45 29 45 24 44 D3 44 BA 44 77 44 72 -- 0B3120
46 FF 46 FA 46 D6 46 D1 46 B2 46 AD 46 42 46 29 -- 0B3130
47 D7 47 D2 47 A3 47 9E 47 75 47 41 47 13 47 0E -- 0B3140
48 A7 48 A2 48 66 48 61 48 52 48 4D 48 0C 48 07 -- 0B3150
49 69 49 60 49 56 49 28 49 1B 49 02 48 C9 48 C4 -- 0B3160
00 0D 4A 95 4A 90 4A 58 4A 3A 49 B9 49 9B 49 73 -- 0B3170
41 76 41 64 41 51 41 3A 40 F4 40 F1 40 D8 00 18 -- 0B3180
FF A0 00 86 00 03 41 EE 41 D1 41 B4 41 9F 41 87 -- 0B3190
F4 D5 FF B0 F4 AD F4 A5 F4 74 FF AC FF A8 FF A4 -- 0B31A0
FF C0 F5 47 F5 11 F5 03 FF BC FF B8 FF B4 F4 E4 -- 0B31B0
FF CC FF C8 F8 2B F7 4D F6 F9 F6 BC F6 40 FF C4 -- 0B31C0
FF D0 F9 83 F9 16 F9 08 F8 BC F8 B7 F8 AF F8 97 -- 0B31D0
FA A3 FA 94 FF D8 FA 66 FA 39 FA 14 F9 E5 FF D4 -- 0B31E0
FF E4 FB E9 FB BB FF E0 FF DC FB 6B FB 01 FA DC -- 0B31F0
FD 51 FD 24 FC FF FC 1E FF F0 FF EC FF E8 01 FE -- 0B3200
FF 0C FE 9F FF F4 FE 26 FE 01 FD CC FD A7 FD 76 -- 0B3210
85 E2 85 DE 85 DA 01 1C 00 0B FF 90 FF 53 FF 33 -- 0B3220
79 5D 79 49 79 34 79 23 79 1B 85 E6 78 C6 78 BC -- 0B3230
79 F5 85 EE 85 EA 79 99 79 91 79 85 79 7D 79 71 -- 0B3240
7A 7C 7A 6A 7A 56 7A 42 7A 2D 7A 25 7A 1D 7A 09 -- 0B3250
7B 4F 7B 31 7B 20 7B 11 7A F1 7A E9 7A DA 7A A6 -- 0B3260
7B CB 7B C4 7B BB 7B AF 7B 95 7B 8D 7B 81 7B 57 -- 0B3270
7C 43 7C 3E 7C 28 7C 23 7C 01 7B FA 7B F1 7B E5 -- 0B3280
7C C3 7C AE 7C 9F 7C 93 7C 7A 7C 5D 85 F6 85 F2 -- 0B3290
7F B2 7F 8C 7F 60 7F 45 7F 30 7F 1B 7E F9 86 0A -- 0B32A0
80 0F 80 0A 80 02 7F FD 7F F0 7F E8 7F E3 7F CE -- 0B32B0
80 EA 80 DC 80 D4 80 CF 80 B9 80 9D 80 74 80 46 -- 0B32C0
81 56 81 3F 81 3A 81 1B 81 16 80 FC 80 F7 80 EF -- 0B32D0
81 AC 81 A2 81 96 81 89 81 84 81 7A 81 65 81 60 -- 0B32E0
82 24 82 08 81 EE 81 E9 81 CF 81 CA 81 C0 81 B1 -- 0B32F0
82 B9 82 B1 82 A2 82 81 82 62 82 5D 82 42 82 3D -- 0B3300
83 73 83 64 83 46 83 41 83 2B 83 1C 82 FB 82 DC -- 0B3310
84 3C 84 14 83 EC 83 CC 83 B1 83 A3 83 80 83 7B -- 0B3320
86 12 86 0E 85 1E 84 F4 84 CC 84 8E 84 7A 84 50 -- 0B3330
FF 89 FF F8 FF F4 00 0A 00 06 85 C5 85 7B 85 64 -- 0B3340
52 99 52 FC 52 F8 52 F4 00 3A 00 0D FF E9 FF B9 -- 0B3350

17 00 16 FC 16 F8 16 F4 16 F0 52 E7 52 CD 52 BC -- 0B3360
15 20 14 F7 14 A4 17 14 17 10 17 0C 17 08 17 04 -- 0B3370
16 A3 16 84 16 65 16 22 15 DA 15 D2 15 91 15 5B -- 0B3380
E8 4E E8 4A E8 46 E8 42 E8 3E 00 38 00 0C 16 BB -- 0B3390
E5 7D E5 58 E5 36 E4 AB E4 81 E4 62 E4 43 E8 52 -- 0B33A0
E7 44 E6 D8 E6 BC E6 A1 E6 88 E6 14 E8 5A E8 56 -- 0B33B0
00 0D E8 26 E7 FB E7 DA E7 C6 E7 A5 E7 8C E7 77 -- 0B33C0
00 F6 00 84 03 D8 03 D4 00 67 00 4A 03 D0 00 22 -- 0B33D0
03 00 02 AB 02 4B 02 0B 01 CF 01 A3 01 7D 01 6D -- 0B33E0
6A 8C 6A 88 6A 84 6A 80 00 2A 00 0B 03 B2 03 70 -- 0B33F0
62 84 62 6B 61 DB 5F 04 5E D0 5E B6 5D 30 01 FE -- 0B3400
```

```
69 42 65 84 64 D1 64 A9 63 C7 63 9F 63 7E 62 E9 -- 0B3410
00 0C 46 4C 46 E8 46 E4 00 06 00 0D 6A 62 69 69 -- 0B3420
DF BF DF B4 DF A9 DF 9E DF 93 DF 88 DF 7E 01 10 -- 0B3430
E0 1B E0 10 E0 05 DF F9 DF ED DF E1 DF D5 DF CA -- 0B3440
E3 D0 E0 6C E0 61 E0 56 E0 4B E0 3F E0 33 E0 27 -- 0B3450
E0 C6 E0 BA E0 AE E0 A3 E0 99 E0 8D E0 81 E3 D4 -- 0B3460
E1 61 E1 4E E1 49 E1 00 E0 F4 E0 E8 E0 DC E0 D1 -- 0B3470
E2 63 E2 40 E2 35 E3 F0 E3 EC E3 E8 E1 85 E1 66 -- 0B3480
D0 EC CC 78 D0 E8 E3 26 E2 FF E2 D8 E2 B1 E2 8A -- 0B3490
D1 04 CC B0 CC A6 D1 00 D0 FC D0 F8 D0 F4 D0 F0 -- 0B34A0
D1 10 D1 0C CD 6F CD 6A CD 65 CD 1D CD 13 D1 08 -- 0B34B0
D1 20 D1 1C CE 0D CE 03 D1 18 D1 14 CD A6 CD 9C -- 0B34C0
D1 30 CE F9 CE EF D1 2C D1 28 CE 82 CE 78 D1 24 -- 0B34D0
D1 3C D1 38 CF FA CF EF CF 88 CF 71 CF 67 D1 34 -- 0B34E0
BD 22 BD 1E D0 DD D0 A7 D0 64 D0 3D D0 31 D0 27 -- 0B34F0
B8 C9 B8 B0 B8 34 B8 1A BD 32 BD 2E BD 2A BD 26 -- 0B3500
BA 53 BA 3A B9 F0 B9 D7 B9 8D B9 74 B9 2B B9 12 -- 0B3510
BD 36 BB B2 BB 7B BB 62 BB 17 BA FE BA B6 BA 9D -- 0B3520
BC F1 BC D8 BC 87 BC 29 BB EE BD 42 BD 3E BD 3A -- 0B3530
3D 32 57 76 57 57 57 44 57 82 00 28 00 0D BD 03 -- 0B3540
3D DE 3D DB 3D C2 3D AA 3D 8D 3D 70 3D 5B 3D 43 -- 0B3550
00 0C 54 AB 54 8A 54 82 54 B4 3E 58 3E 45 3E 2E -- 0B3560
6A 75 6A 65 6A 38 6A 2A 6A 16 72 02 71 FE 00 52 -- 0B3570
6B 9C 6B 77 6B 5B 6B 3A 6B 15 6A F3 6A B1 6A 97 -- 0B3580
6E 71 6D E0 6C E2 6C 72 6C 43 6C 10 6B D5 6B B8 -- 0B3590
70 34 70 1C 6F DD 6F BD 6F A0 6F 8D 6E D7 6E 89 -- 0B35A0
71 83 71 43 71 31 71 1B 70 FF 70 E3 70 D0 70 47 -- 0B35B0
0E 6E 0E 68 0E 64 0E 60 00 18 00 0D 71 F0 71 D4 -- 0B35C0
0E 2B 0E 1D 0D C7 0D 44 0C 91 0C 31 0B B3 0E 72 -- 0B35D0
2C 5C 2C 44 2C 31 2C 1D 2C 05 2B F2 01 EA 00 0C -- 0B35E0
2E A7 2E 7F 2D FE 2D 7C 2C FA 2C D4 2C AA 2C 84 -- 0B35F0
31 1E 30 A1 30 76 30 02 2F C7 2F 84 2E CF 01 FE -- 0B3600
32 CC 32 89 32 7B 32 6B 32 40 32 15 31 A1 31 66 -- 0B3610
33 8B 33 72 33 4F 33 2F 33 19 33 07 32 F4 32 DE -- 0B3620
A8 46 A8 37 34 97 34 66 34 0E 33 E2 33 D8 33 B2 -- 0B3630
AA 74 AA 64 A9 F9 A9 D3 A9 A5 A9 8F A8 D5 A8 79 -- 0B3640
AB 5B AB 45 AB 33 AB 20 AB 0A AA F8 AA B2 AA 81 -- 0B3650
AC D8 AC 89 AC 30 AC 04 AB E8 AB C2 AB A6 AB 80 -- 0B3660
90 B5 90 A1 96 F0 90 79 90 65 96 EC 90 3D 96 E8 -- 0B3670
96 F8 91 9B 91 69 91 37 91 17 90 F1 90 DD 96 F4 -- 0B3680
97 00 92 71 92 5D 96 FC 92 2C 92 03 91 DD 91 C9 -- 0B3690
93 AC 93 83 93 57 93 2B 92 FC 92 D6 92 B6 92 A2 -- 0B36A0
94 70 97 0C 94 3C 94 28 97 08 93 F4 93 E0 97 04 -- 0B36B0
95 52 97 14 95 21 94 F2 94 CC 94 B8 97 10 94 84 -- 0B36C0
96 3F 97 1C 95 F7 95 D1 95 AB 95 97 97 18 95 66 -- 0B36D0
48 0B 47 F8 47 E5 47 D2 96 DD 96 B7 96 91 96 6B -- 0B36E0
48 A3 48 90 48 7D 48 6A 48 57 48 44 48 31 48 1E -- 0B36F0

49 3B 49 28 49 15 49 02 48 EF 48 DC 48 C9 48 B6 -- 0B3700
49 D3 49 C0 49 AD 49 9A 49 87 49 74 49 61 49 4E -- 0B3710
4A 6B 4A 58 4A 45 4A 32 4A 1F 4A 0C 49 F9 49 E6 -- 0B3720
4B 03 4A F0 4A DD 4A CA 4A B7 4A A4 4A 91 4A 7E -- 0B3730
4B 9B 4B 88 4B 75 4B 62 4B 4F 4B 3C 4B 29 4B 16 -- 0B3740
4C 33 4C 20 4C 0D 4B FA 4B E7 4B D4 4B C1 4B AE -- 0B3750
4C CB 4C B8 4C A5 4C 92 4C 7F 4C 6C 4C 59 4C 46 -- 0B3760
4D 63 4D 50 4D 3D 4D 2A 4D 17 4D 04 4C F1 4C DE -- 0B3770
4D FB 4D E8 4D D5 4D C2 4D AF 4D 9C 4D 89 4D 76 -- 0B3780
4E 93 4E 80 4E 6D 4E 5A 4E 47 4E 34 4E 21 4E 0E -- 0B3790
4F 2B 4F 18 4F 05 4E F2 4E DF 4E CC 4E B9 4E A6 -- 0B37A0
4F C3 4F B0 4F 9D 4F 8A 4F 77 4F 64 4F 51 4F 3E -- 0B37B0
```

```
50 5B 50 48 50 35 50 22 50 0F 4F FC 4F E9 4F D6 -- 0B37C0
43 8D 43 7A 43 67 43 54 43 41 43 2E 00 1E 00 0D -- 0B37D0
44 25 44 12 43 FF 43 EC 43 D9 43 C6 43 B3 43 A0 -- 0B37E0
D1 94 D1 81 D1 6E D1 5B D1 48 00 84 00 0C 44 38 -- 0B37F0
D2 19 D2 06 D1 F3 D1 E0 D1 CD D1 BA D1 A7 01 FE -- 0B3800
D2 B1 D2 9E D2 8B D2 78 D2 65 D2 52 D2 3F D2 2C -- 0B3810
D3 49 D3 36 D3 23 D3 10 D2 FD D2 EA D2 D7 D2 C4 -- 0B3820
D3 E1 D3 CE D3 BB D3 A8 D3 95 D3 82 D3 6F D3 5C -- 0B3830
D4 79 D4 66 D4 53 D4 40 D4 2D D4 1A D4 07 D3 F4 -- 0B3840
D5 11 D4 FE D4 EB D4 D8 D4 C5 D4 B2 D4 9F D4 8C -- 0B3850
D5 A9 D5 96 D5 83 D5 70 D5 5D D5 4A D5 37 D5 24 -- 0B3860
00 2E 00 0D D6 1B D6 08 D5 F5 D5 E2 D5 CF D5 BC -- 0B3870
38 5D 38 48 38 33 38 1E 38 09 37 F4 37 DF 37 CA -- 0B3880
39 05 38 F0 38 DB 38 C6 38 B1 38 9C 38 87 38 72 -- 0B3890
00 0A 4E F6 4E D5 4E B4 4E 8C 4E 7B 5A B0 39 1A -- 0B38A0
A4 DF A4 D0 A4 C1 A4 89 A4 7A A4 6B A4 5C 00 DA -- 0B38B0
A6 D3 A6 A6 A6 79 A6 1C A6 09 A5 8A A5 77 A4 EE -- 0B38C0
A8 AB A8 7C A8 4C A8 1E A7 F0 A7 C4 A7 AE A7 00 -- 0B38D0
AA 17 A9 F5 A9 C7 A9 98 A9 6A A9 3C A9 0C A8 DB -- 0B38E0
AB 14 AA F0 AA EB AA 83 AA 6E AA 58 AA 41 AA 2C -- 0B38F0
AB C2 AB B1 AB 83 AB 7E AB 6C AB 58 AB 33 AB 19 -- 0B3900
AC 79 AC 6D AC 59 AC 45 AC 25 AB F5 AB D6 AB D1 -- 0B3910
AD 7A AD 66 AD 5B AD 50 AD 13 AC A8 AC 8A AC 85 -- 0B3920
AE 89 AE 74 AE 46 AE 04 AD EF AD C1 AD 93 AD 8E -- 0B3930
AF E4 AF DF AF D6 AF CD AF C4 AF BB AF 9A AF 95 -- 0B3940
B0 B9 B0 A9 B0 A4 B0 82 B0 60 B0 46 B0 24 AF FE -- 0B3950
B3 45 B3 09 B2 B6 B2 77 B2 4F B1 66 B1 44 B0 BE -- 0B3960
B5 2D B5 1D B5 18 B5 02 B4 06 B3 D8 B3 9F B3 71 -- 0B3970
01 6A 00 06 B6 9A B6 28 B6 23 B5 97 B5 92 B5 32 -- 0B3980
D4 3E D4 39 D4 13 D3 FF D3 3B D3 36 D3 26 D3 21 -- 0B3990
D5 55 D5 38 D5 18 D5 02 D4 FD D4 EB D4 53 D4 4E -- 0B39A0
D5 E8 D5 C7 D5 C2 D5 90 D5 8B D5 7B D5 76 D5 67 -- 0B39B0
D7 11 D7 01 D6 FC D6 B7 D6 9A D6 7F D6 41 D6 17 -- 0B39C0
D7 F6 D7 DC FF 3E FF 3A FF 36 D7 57 D7 52 D7 16 -- 0B39D0
D9 88 FF 42 D9 4E D8 F9 D8 B2 D8 75 D8 61 D8 1F -- 0B39E0
DF 27 DE 67 DD 8D DD 51 DC 6C DB 32 DA C0 D9 DD -- 0B39F0
E1 66 E0 D3 E0 9C E0 65 E0 2E DF EC DF DD 01 FE -- 0B3A00
E4 05 E3 DE E3 CF E3 19 E2 A7 E2 4B E2 35 E1 7F -- 0B3A10
E6 73 E5 D7 E5 7B E5 65 E4 DE E4 AC E4 88 E4 56 -- 0B3A20
E9 DD E9 D8 E9 8C E9 87 E8 EA E8 D6 E7 E4 E7 D5 -- 0B3A30
EB 08 EB 03 EA A8 EA A3 EA 68 EA 63 EA 3F EA 3A -- 0B3A40
EC 65 EC 56 EC 3D EC 2C EB D2 EB C1 EB 61 EB 46 -- 0B3A50
ED B9 ED 92 ED 81 ED 56 ED 2D EC E9 EC CC EC A1 -- 0B3A60
EF 18 EE E0 EE AD EE 8E EE 56 EE 2C EE 07 ED E0 -- 0B3A70
F2 99 F1 EA F1 A5 F1 93 F1 17 F0 FA F0 51 EF 65 -- 0B3A80
F3 6C F3 46 F3 30 F3 0A F2 F4 F2 CE F2 B3 F2 AE -- 0B3A90

F5 4A F5 10 F4 D6 F3 ED F3 A5 F3 A0 F3 84 F3 7F -- 0B3AA0
F7 C1 F7 AC F6 F9 F6 A7 F6 51 F6 2F F5 D9 F5 81 -- 0B3AB0
F8 94 F8 81 F8 5B F8 43 F8 1D F8 07 F7 E1 F7 C6 -- 0B3AC0
FA E3 FA 5C FA 25 F9 EB F9 02 F8 BA F8 B5 F8 99 -- 0B3AD0
FC 3C FC 1F FB DB FB C1 FB 70 FB 1B FB 0A FA F4 -- 0B3AE0
00 04 00 0D FE 2C FD B9 FD 48 FC ED FC 9B FC 57 -- 0B3AF0
F0 02 EF FE EF FA EF F6 00 2C 00 0A 59 7E 59 5F -- 0B3B00
E7 EF E7 D2 E7 BA E7 85 DF F3 DE 37 DE 20 DE 09 -- 0B3B10
EB 21 EA 24 E9 A4 E9 01 E8 F3 E8 B5 E8 85 E8 03 -- 0B3B20
01 12 00 06 54 28 53 F8 00 04 00 0D EC D5 EB 3A -- 0B3B30
6F 13 6E FA 6E DB 6E A2 6E 70 6E 58 6E 2C 6D CC -- 0B3B40
71 7D 70 95 6F C9 6F 6D 6F 68 6F 46 6F 3A 6F 35 -- 0B3B50
74 2C 74 1C 73 E9 73 15 73 10 73 08 73 03 71 BA -- 0B3B60
```

789

```
74 F9 74 ED 74 E8 74 DO 74 BA 74 46 74 41 74 31 -- 0B3B70
76 AA 76 83 76 58 76 15 75 FF 75 54 75 38 74 FE -- 0B3B80
78 99 78 60 78 2E 78 16 77 EA 77 63 77 4D 76 CE -- 0B3B90
7B 89 7B 2B 7B 15 7A F3 7A 99 7A 52 78 ED 78 D4 -- 0B3BA0
7C F9 7C BB 7C 90 7C 59 7C 1F 7C 01 7B D7 7B 9F -- 0B3BB0
82 D7 80 7F 7F FA 7E F6 7E C9 7D B3 7D 91 7D 70 -- 0B3BC0
86 CE 86 B1 86 5F 85 FF 85 4B 83 B7 83 5C 83 04 -- 0B3BD0
8A 9E 8A 85 8A 62 89 91 89 74 89 22 88 D7 88 23 -- 0B3BE0
8D 96 8C AD 8C 1F 8B FE 8B A9 8B 43 8B 15 8A D8 -- 0B3BF0
94 1B 92 44 91 DB 91 64 91 3A 8E E2 8D BB 01 FE -- 0B3C00
98 10 97 D3 96 C6 95 FA 95 DD 95 8B 94 8A 94 6D -- 0B3C10
9C 6C 9B 30 9B 0A 9A E6 9A BD 98 D2 98 63 98 26 -- 0B3C20
9F AF 9E 19 9D F3 9D CF 9D A6 9D 22 9C FC 9C B7 -- 0B3C30
A2 2B A1 C4 A1 9A A1 71 A1 48 A0 D4 A0 86 A0 15 -- 0B3C40
F6 44 F6 29 F6 0E F5 F7 00 76 00 0B A2 61 A2 53 -- 0B3C50
F7 6D F7 52 F7 37 F7 20 F7 03 F6 85 F6 6B F6 5E -- 0B3C60
F8 98 F8 59 F8 42 F8 17 F7 F5 F7 CC F7 AA F7 87 -- 0B3C70
F9 C4 F9 9E F9 76 F9 11 F8 CB F8 B5 F8 B0 F8 9D -- 0B3C80
FB AA FB 87 FB 5B FB 33 FA FC FA CD FA 86 FA 6B -- 0B3C90
FD 1F FC F3 FC CB FC AB FC 4F FC 2C FC 00 FB D8 -- 0B3CA0
FE 57 FE 38 FE 07 FD E4 FD B8 FD 90 FD 70 FD 42 -- 0B3CB0
00 0D FF E6 FF C4 FF 8E FF 6C FE F8 FE D9 FE AE -- 0B3CC0
25 2B 25 0D 24 83 24 3B 24 30 24 12 26 2A 00 42 -- 0B3CD0
3C 8D 3C 6C 3C 46 3C 35 3C 1C 3B FB 25 7E 25 36 -- 0B3CE0
34 FE 34 D7 3D 1E 3D 0D 3C F4 3C D4 3C B7 3C A6 -- 0B3CF0
36 00 35 D4 35 B7 35 A0 35 81 35 5A 35 34 35 1D -- 0B3D00
FF B6 FF A4 FF 8C FF 6C 00 0A 00 0A 36 36 36 1F -- 0B3D10
51 2A 50 FA 51 6E 51 6A 51 66 00 30 00 0D FF CE -- 0B3D20
29 18 28 D8 28 CD 28 AC 28 98 28 7A 2A 66 51 5C -- 0B3D30
29 DD 29 D2 29 B9 29 A1 29 87 29 6D 29 53 29 33 -- 0B3D40
A3 09 A2 F0 A2 C9 00 4E 00 0C 2A 56 2A 0E 29 FD -- 0B3D50
A4 0D A3 FA A3 E0 A3 C3 A3 A2 A3 81 A3 39 A3 1A -- 0B3D60
A5 60 A5 3F A4 F4 A4 D5 A4 C4 A4 AB A4 84 A4 2D -- 0B3D70
A6 87 A6 38 A6 20 A5 EB A5 CB A5 B8 A5 9E A5 81 -- 0B3D80
A7 A0 A7 7F A7 5E A7 4D A6 F8 A6 D9 A6 C8 A6 AE -- 0B3D90
49 81 49 7C 00 10 00 0D A8 0A A7 EA A7 D7 A7 BD -- 0B3DA0
00 94 00 0A 49 F5 49 F0 49 CC 49 C7 49 AA 49 A5 -- 0B3DB0
7A D4 7A 70 79 80 79 67 79 48 78 FE 78 E6 78 BA -- 0B3DC0
7B 92 7B 8A 7B 77 7B 4C 7A F2 7A ED 7A E5 7A E0 -- 0B3DD0
7C 0F 7B FF 7B FA 7B F2 7B DF 7B AC 7B A7 7B 97 -- 0B3DE0
7D 76 7D 41 7D 1D 7C F6 7C BA 7C 50 7C 35 7C 14 -- 0B3DF0
7F F0 7F B2 7F 6B 7F 3D 7E F5 7E C8 7E 6D 01 FE -- 0B3E00
82 09 81 CD 81 21 80 BB 80 8D 80 56 80 20 80 0C -- 0B3E10
86 14 85 D2 84 BD 84 55 83 79 83 1F 82 86 82 2F -- 0B3E20
8B 78 8A 52 89 22 88 F8 87 62 87 47 86 CC 86 AB -- 0B3E30

8D 98 8D 6F 8D 3E 8D 15 8C E6 8C 9E 8C 45 8C 09 -- 0B3E40
19 C8 17 3B 19 C4 00 66 00 0D 8E 09 8D F6 8D B5 -- 0B3E50
18 2E 18 09 19 D4 17 E0 19 D0 17 A7 19 CC 17 6E -- 0B3E60
18 E0 18 BF 18 A9 19 E0 19 DC 18 7C 18 57 19 D8 -- 0B3E70
19 93 19 7C 19 5B 19 45 19 E8 19 E4 19 18 18 F7 -- 0B3E80
50 D2 50 CE 50 CA 50 C6 59 D3 59 BB 59 A9 19 B4 -- 0B3E90
47 E1 48 84 48 80 50 B4 50 7E 50 DE 50 DA 50 D6 -- 0B3EA0
5C F8 5C D6 5C BD 48 74 48 59 48 41 48 14 47 F9 -- 0B3EB0
BE 0D BD ED BD CD BD AD BD 8D BD 66 00 4C 00 0C -- 0B3EC0
BF 0D BE ED BE CD BE AD BE 8D BE 6D BE 4D BE 2D -- 0B3ED0
C0 53 C0 33 C0 13 BF F3 BF D3 BF B3 BF 93 BF 25 -- 0B3EE0
C1 55 C1 35 C1 15 C0 F5 C0 D5 C0 B5 C0 95 C0 76 -- 0B3EF0
C2 55 C2 35 C2 15 C1 F5 C1 D5 C1 B5 C1 95 C1 75 -- 0B3F00
4B 4B 4B 2C 4B 1B 4A FC 4A EB 4A D2 00 10 00 0D -- 0B3F10
```

790

```
DA 58 DA 54 DA 50 DA 4C 00 38 00 0C 4B 7B 4B 5C -- 0B3F20
D6 A2 D6 9A D6 35 D6 30 DA 84 DA 7C DA 68 DA 60 -- 0B3F30
D8 EB D8 D9 D8 D4 D8 85 D8 6F D7 CE D7 C0 D7 4F -- 0B3F40
D9 CD D9 C8 D9 AC D9 39 D9 34 D9 12 D8 FC D8 F0 -- 0B3F50
08 20 08 02 0B 1C 57 28 57 15 57 32 00 54 00 0D -- 0B3F60
09 D5 09 95 09 76 09 0A 08 DD 08 B9 08 9A 08 88 -- 0B3F70
5B FB 5B F6 0A BC 0A 9E 0A 8A 0A 73 0A 34 09 F1 -- 0B3F80
2E A5 2E 90 2E 8B 53 3A 53 35 53 1E 53 0F 53 66 -- 0B3F90
3E 91 3E 77 2F 37 2F 32 2F 0E 2F 09 2E E0 2E C2 -- 0B3FA0
FF 8F FF 6D 00 0C 00 04 3E D3 3E CE 3E BA 3E B5 -- 0B3FB0
59 1C 59 17 00 1C 00 0D FF CA FF BB FF A8 FF A3 -- 0B3FC0
4D 08 4D 8A 4D 86 2D E2 2D D8 2D 96 2E 36 59 29 -- 0B3FD0
97 39 9C D2 00 20 00 0C 4D 7A 4D 5A 4D 4C 4D 2A -- 0B3FE0
9A 71 9A 68 9A 30 9A 16 99 B4 97 E8 97 93 97 55 -- 0B3FF0
00 0D 9C 78 9C 5B 9B AF 9B 86 9B 4D 9B 02 01 FE -- 0B4000
5C 41 47 38 46 FC 56 01 56 2C 4F B2 58 40 00 10 -- 0B4010
82 2E 82 14 81 DF 81 C3 89 06 00 3A 00 0C 5C 46 -- 0B4020
84 75 84 16 83 D7 83 CF 82 CD 82 B6 82 A0 82 95 -- 0B4030
86 7F 86 54 85 E1 85 C9 85 8E 85 4E 85 37 85 1A -- 0B4040
88 E7 88 D0 88 BD 87 D3 87 6E 87 4E 86 D5 86 AB -- 0B4050
30 7E 30 61 30 47 30 30 30 2B 31 62 00 4A 00 0D -- 0B4060
4F 2B 4F 0F 4F 90 30 F0 30 CE 30 C9 30 B5 30 B0 -- 0B4070
53 C4 53 AE 53 A9 53 89 4F 61 4F 5C 4F 42 4F 3D -- 0B4080
48 A6 48 97 49 34 55 60 55 3D 55 72 5A FD 5A F8 -- 0B4090
00 07 39 8B 49 17 49 12 49 01 48 FC 48 DD 48 C2 -- 0B40A0
FF 2D FF 28 FF 01 FE EE FE E9 FE C7 FF AC 00 1A -- 0B40B0
00 30 00 0D FF 91 FF 8C FF 80 FF 7B FF 49 FF 44 -- 0B40C0
37 B8 33 15 32 A6 32 76 32 3E 32 06 31 DB 33 30 -- 0B40D0
3F AB 40 6E 37 A6 37 BC 37 18 36 E5 36 B0 36 81 -- 0B40E0
5B 6C 40 3B 40 36 40 22 40 1D 3F DC 3F D7 3F C8 -- 0B40F0
2E 47 45 53 45 3F 0A 00 03 3F 54 44 4C 04 00 02 -- 0B4100
20 20 32 2E 47 45 53 45 3F 0A 00 04 20 20 20 31 -- 0B4110
00 06 20 20 20 31 2E 47 45 53 44 3F 0A 00 05 20 -- 0B4120
45 3F 0A 00 07 20 20 20 33 2E 47 45 53 45 3F 0A -- 0B4130
47 45 53 44 3F 0A 00 08 20 20 20 34 2E 47 45 53 -- 0B4140
20 35 2E 47 45 53 45 3F 0A 00 09 20 20 20 32 2E -- 0B4150
0B 20 20 20 36 2E 47 45 53 45 3F 0A 00 0A 20 20 -- 0B4160
3F 0A 00 0C 20 20 20 37 2E 47 45 53 45 3F 0A 00 -- 0B4170
45 53 45 3F 0A 00 0D 20 20 20 38 2E 47 45 53 45 -- 0B4180
33 2E 47 45 53 44 3F 0A 00 0E 20 20 20 39 2E 47 -- 0B4190
50 55 05 00 10 4B 43 41 54 53 05 00 0F 20 20 20 -- 0B41A0
4B 43 41 50 55 45 4C 41 43 53 0A 00 11 4B 43 41 -- 0B41B0
45 44 4F 43 5F 53 45 54 59 42 54 45 53 0D 00 12 -- 0B41C0
00 06 41 54 41 44 5F 53 4F 49 54 45 4E 0B 00 13 -- 0B41D0

00 00 00 00 00 00 00 00 00 00 00 00 00 00 00 18 -- 0B41E0
00 04 03 4C 00 01 00 00 00 00 00 00 00 00 00 00 -- 0B41F0
00 00 00 28 00 00 00 2C 00 00 00 00 00 00 01 FE -- 0B4200
00 00 00 77 00 00 00 7B 00 00 00 4F 00 00 00 53 -- 0B4210
00 00 00 C5 00 00 00 C9 00 00 00 9F 00 00 00 A3 -- 0B4220
00 00 01 1F 00 00 01 23 00 00 00 F6 00 00 00 FA -- 0B4230
00 00 01 71 00 00 01 75 00 00 01 45 00 00 01 49 -- 0B4240
00 00 01 C6 00 00 01 CA 00 00 01 9E 00 00 01 A2 -- 0B4250
00 00 02 19 00 00 02 1D 00 00 01 F0 00 00 01 F4 -- 0B4260
00 00 02 69 00 00 02 6D 00 00 02 42 00 00 02 46 -- 0B4270
00 00 02 B8 00 00 02 BC 00 00 02 91 00 00 02 95 -- 0B4280
00 00 03 0C 00 00 03 10 00 00 02 E3 00 00 02 E7 -- 0B4290
00 00 03 5F 00 00 03 63 00 00 03 35 00 00 03 39 -- 0B42A0
00 00 03 B0 00 00 03 B4 00 00 03 87 00 00 03 8B -- 0B42B0
00 00 04 06 00 00 04 0A 00 00 03 DD 00 00 03 E1 -- 0B42C0
```

```
00 00 04 54 00 00 04 58 00 00 04 2C 00 00 04 30 -- 0B42D0
00 00 04 A5 00 00 04 A9 00 00 04 7E 00 00 04 82 -- 0B42E0
00 00 04 F3 00 00 04 F7 00 00 04 CC 00 00 04 D0 -- 0B42F0
00 00 05 41 00 00 05 45 00 00 05 1A 00 00 05 1E -- 0B4300
00 00 05 92 00 00 05 96 00 00 05 6A 00 00 05 6E -- 0B4310
00 00 05 E6 00 00 05 EA 00 00 05 BB 00 00 05 BF -- 0B4320
00 00 06 35 00 00 06 39 00 00 06 0C 00 00 06 10 -- 0B4330
00 00 06 8A 00 00 06 8E 00 00 06 61 00 00 06 65 -- 0B4340
00 00 06 DD 00 00 06 E1 00 00 06 B3 00 00 06 B7 -- 0B4350
00 00 07 30 00 00 07 34 00 00 07 06 00 00 07 0A -- 0B4360
00 00 07 84 00 00 07 88 00 00 07 59 00 00 07 5D -- 0B4370
00 00 07 D4 00 00 07 D8 00 00 07 AE 00 00 07 B2 -- 0B4380
00 00 08 22 00 00 08 26 00 00 07 FB 00 00 07 FF -- 0B4390
00 00 08 72 00 00 08 76 00 00 08 4B 00 00 08 4F -- 0B43A0
00 00 08 C2 00 00 08 C6 00 00 08 98 00 00 08 9C -- 0B43B0
00 00 09 14 00 00 09 18 00 00 08 EC 00 00 08 F0 -- 0B43C0
00 00 09 69 00 00 09 6D 00 00 09 43 00 00 09 47 -- 0B43D0
00 00 09 B9 00 00 09 BD 00 00 09 91 00 00 09 95 -- 0B43E0
00 00 0A 0D 00 00 0A 11 00 00 09 E1 00 00 09 E5 -- 0B43F0
0A 8A 00 00 0A 63 00 00 0A 35 00 00 0A 39 01 FE -- 0B4400
0A E2 00 00 0A B2 00 00 0A B6 00 00 0A 86 00 00 -- 0B4410
0B 89 00 00 0B 60 00 00 0B 34 00 00 0B 0C 00 00 -- 0B4420
0C 2E 00 00 0C 04 00 00 0B DD 00 00 0B B1 00 00 -- 0B4430
0C D8 00 00 0C AF 00 00 0C 84 00 00 0C 59 00 00 -- 0B4440
0D 7C 00 00 0D 53 00 00 0D 2A 00 00 0D 03 00 00 -- 0B4450
0E 1F 00 00 0D FA 00 00 0D D2 00 00 0D A7 00 00 -- 0B4460
0E C8 00 00 0E 9F 00 00 0E 71 00 00 0E 47 00 00 -- 0B4470
0F 6E 00 00 0F 47 00 00 0F 1D 00 00 0E F1 00 00 -- 0B4480
10 15 00 00 0F EB 00 00 0F C1 00 00 0F 97 00 00 -- 0B4490
10 BC 00 00 10 95 00 00 10 69 00 00 10 42 00 00 -- 0B44A0
11 66 00 00 11 3D 00 00 11 13 00 00 10 E7 00 00 -- 0B44B0
12 10 00 00 11 E6 00 00 11 BB 00 00 11 93 00 00 -- 0B44C0
12 B2 00 00 12 8A 00 00 12 61 00 00 12 37 00 00 -- 0B44D0
13 50 00 00 13 27 00 00 12 FF 00 00 12 D8 00 00 -- 0B44E0
14 14 00 00 13 ED 00 00 13 A0 00 00 13 76 00 00 -- 0B44F0
14 E4 00 00 14 BB 00 00 14 90 00 00 14 66 00 00 -- 0B4500
15 88 00 00 15 60 00 00 15 36 00 00 15 0B 00 00 -- 0B4510
16 29 00 00 16 00 00 00 15 D8 00 00 15 B1 00 00 -- 0B4520
16 EE 00 00 16 C7 00 00 16 A0 00 00 16 78 00 00 -- 0B4530
00 03 00 00 17 63 00 00 17 3C 00 00 17 14 00 00 -- 0B4540
02 3A 00 00 02 1D 00 00 00 0F 00 00 00 03 22 08 -- 0B4550
02 92 00 00 02 86 00 00 02 66 00 00 02 45 00 00 -- 0B4560
03 90 00 00 02 E3 00 00 02 D7 00 00 02 BB 00 00 -- 0B4570

04 30 00 00 03 F4 00 00 03 DC 00 00 03 A4 00 00 -- 0B4580
04 C2 00 00 04 94 00 00 04 5B 00 00 04 45 00 00 -- 0B4590
05 23 00 00 05 08 00 00 04 EF 00 00 04 D8 00 00 -- 0B45A0
06 17 00 00 05 E9 00 00 05 CC 00 00 05 2D 00 00 -- 0B45B0
08 E8 00 00 08 7A 00 00 08 2E 00 00 06 45 00 00 -- 0B45C0
0B 1A 00 00 0B 00 00 00 0A E6 00 00 0A CC 00 00 -- 0B45D0
0B 88 00 00 0B 65 00 00 0B 50 00 00 0B 34 00 00 -- 0B45E0
0D 87 00 00 0D 2D 00 00 0C 31 00 00 0C 24 00 00 -- 0B45F0
00 00 0E 1F 00 00 0D D2 00 00 0D A8 00 00 01 FE -- 0B4600
00 00 0E FF 00 00 0E D9 00 00 0E B1 00 00 0E 76 -- 0B4610
00 00 10 87 00 00 0F F3 00 00 0F 58 00 00 0F 4E -- 0B4620
00 00 10 F5 00 00 10 DA 00 00 10 BE 00 00 10 A1 -- 0B4630
00 00 11 D3 00 00 11 9F 00 00 11 83 00 00 11 25 -- 0B4640
00 00 12 1F 00 00 12 0C 00 00 11 F9 00 00 11 E6 -- 0B4650
00 00 12 6F 00 00 12 5B 00 00 12 47 00 00 12 33 -- 0B4660
00 00 13 1D 00 00 12 E9 00 00 12 CD 00 00 12 8A -- 0B4670
```

```
00  00  13  C9  00  00  13  B9  00  00  13  8D  00  00  13  4A  --  0B4680
00  00  14  C7  00  00  14  95  00  00  14  55  00  00  14  17  --  0B4690
00  00  15  B1  00  00  15  7E  00  00  15  4E  00  00  14  FB  --  0B46A0
00  00  16  64  00  00  16  24  00  00  15  E2  00  00  15  C2  --  0B46B0
00  00  17  14  00  00  16  E9  00  00  16  A5  00  00  16  82  --  0B46C0
00  00  18  86  00  00  17  CC  00  00  17  7F  00  00  17  38  --  0B46D0
00  00  1A  8C  00  00  19  B3  00  00  19  A7  00  00  19  43  --  0B46E0
00  00  1B  F8  00  00  1B  E4  00  00  1B  00  00  00  1A  F2  --  0B46F0
00  00  1C  BF  00  00  1C  77  00  00  1C  3F  00  00  1C  0E  --  0B4700
00  00  1D  21  00  00  1C  FD  00  00  1C  E8  00  00  1C  D6  --  0B4710
00  00  1D  FE  00  00  1D  B3  00  00  1D  66  00  00  1D  59  --  0B4720
00  00  1E  62  00  00  1E  55  00  00  1E  36  00  00  1E  1B  --  0B4730
00  00  22  15  00  00  21  CC  00  00  21  13  00  00  20  D7  --  0B4740
00  00  22  E7  00  00  22  94  00  00  22  52  00  00  22  33  --  0B4750
00  00  23  63  00  00  23  3A  00  00  23  20  00  00  23  03  --  0B4760
00  00  23  F8  00  00  23  D8  00  00  23  8C  00  00  23  79  --  0B4770
00  00  25  5D  00  00  25  3C  00  00  24  EB  00  00  24  46  --  0B4780
00  00  25  E9  00  00  25  CE  00  00  25  B3  00  00  25  7A  --  0B4790
00  00  27  19  00  00  26  DF  00  00  26  52  00  00  26  09  --  0B47A0
00  00  28  95  00  00  28  43  00  00  28  38  00  00  28  17  --  0B47B0
00  00  29  57  00  00  29  2A  00  00  28  F8  00  00  28  CF  --  0B47C0
00  00  2A  0A  00  00  29  E8  00  00  29  A2  00  00  29  6D  --  0B47D0
00  00  2B  22  00  00  2B  02  00  00  2A  DB  00  00  2A  4E  --  0B47E0
00  00  2B  90  00  00  2B  7B  00  00  2B  67  00  00  2B  43  --  0B47F0
2B  E7  00  00  2B  CF  00  00  2B  B6  00  00  2B  A0  01  FE  --  0B4800
2C  5D  00  00  2C  35  00  00  2C  21  00  00  2B  FB  00  00  --  0B4810
2C  D7  00  00  2C  AC  00  00  2C  94  00  00  2C  7C  00  00  --  0B4820
2D  45  00  00  2D  39  00  00  2D  23  00  00  2C  FE  00  00  --  0B4830
2E  6E  00  00  2E  2F  00  00  2D  D7  00  00  2D  71  00  00  --  0B4840
30  06  00  00  2F  AB  00  00  2F  16  00  00  2E  BD  00  00  --  0B4850
30  E5  00  00  30  B9  00  00  30  79  00  00  30  43  00  00  --  0B4860
31  DF  00  00  31  B2  00  00  31  77  00  00  31  44  00  00  --  0B4870
32  CD  00  00  32  91  00  00  32  65  00  00  32  13  00  00  --  0B4880
33  9F  00  00  33  76  00  00  33  4F  00  00  33  0E  00  00  --  0B4890
34  F9  00  00  34  D8  00  00  34  45  00  00  34  03  00  00  --  0B48A0
35  81  00  00  35  67  00  00  35  37  00  00  35  1E  00  00  --  0B48B0
36  69  00  00  36  36  00  00  36  0E  00  00  35  BE  00  00  --  0B48C0
37  51  00  00  37  10  00  00  36  EC  00  00  36  C8  00  00  --  0B48D0
37  D7  00  00  37  BB  00  00  37  9E  00  00  37  84  00  00  --  0B48E0
38  4B  00  00  38  40  00  00  38  1B  00  00  37  F2  00  00  --  0B48F0
3B  C8  00  00  3B  B1  00  00  3B  98  00  00  3B  81  00  00  --  0B4900
3D  94  00  00  3D  2D  00  00  3C  94  00  00  3B  FF  00  00  --  0B4910

3E  B9  00  00  3D  FF  00  00  3D  E4  00  00  3D  B8  00  00  --  0B4920
3F  91  00  00  3F  37  00  00  3F  17  00  00  3E  FE  00  00  --  0B4930
40  EF  00  00  40  AC  00  00  40  89  00  00  40  2E  00  00  --  0B4940
41  AC  00  00  41  8D  00  00  41  5A  00  00  41  26  00  00  --  0B4950
42  4E  00  00  42  28  00  00  41  E9  00  00  41  C1  00  00  --  0B4960
43  47  00  00  43  0C  00  00  42  7C  00  00  42  6D  00  00  --  0B4970
44  64  00  00  44  26  00  00  43  F1  00  00  43  81  00  00  --  0B4980
45  4D  00  00  45  07  00  00  44  C2  00  00  44  85  00  00  --  0B4990
46  69  00  00  46  16  00  00  45  D5  00  00  45  87  00  00  --  0B49A0
47  E0  00  00  47  A5  00  00  47  30  00  00  46  DC  00  00  --  0B49B0
49  1A  00  00  48  90  00  00  48  5D  00  00  48  1C  00  00  --  0B49C0
4A  B9  00  00  4A  3E  00  00  49  BF  00  00  49  56  00  00  --  0B49D0
4B  AC  00  00  4B  96  00  00  4B  5B  00  00  4B  04  00  00  --  0B49E0
4C  EB  00  00  4C  C6  00  00  4B  D8  00  00  4B  CB  00  00  --  0B49F0
00  00  4D  65  00  00  4D  2E  00  00  4D  0C  00  00  01  FE  --  0B4A00
00  00  4E  11  00  00  4D  EC  00  00  4D  C7  00  00  4D  95  --  0B4A10
00  00  4F  1F  00  00  4E  9D  00  00  4E  67  00  00  4E  3C  --  0B4A20
```

793

```
00 00 50 21 00 00 4F EB 00 00 4F 75 00 00 4F 4A -- 0B4A30
00 00 51 1B 00 00 50 F2 00 00 50 C5 00 00 50 7D -- 0B4A40
00 00 52 4F 00 00 52 1F 00 00 51 D4 00 00 51 94 -- 0B4A50
00 00 53 F3 00 00 53 86 00 00 53 1F 00 00 52 B1 -- 0B4A60
00 00 55 AD 00 00 55 1E 00 00 54 A4 00 00 54 4F -- 0B4A70
00 00 56 7B 00 00 56 40 00 00 56 1F 00 00 55 F2 -- 0B4A80
00 00 57 4F 00 00 57 28 00 00 56 F5 00 00 56 BF -- 0B4A90
00 00 58 79 00 00 58 1B 00 00 57 F4 00 00 57 6C -- 0B4AA0
00 00 59 6A 00 00 59 17 00 00 58 F8 00 00 58 C8 -- 0B4AB0
00 00 5A 8D 00 00 5A 80 00 00 5A 27 00 00 59 AA -- 0B4AC0
00 00 5D 27 00 00 5C CB 00 00 5C 2C 00 00 5C 11 -- 0B4AD0
00 00 5E 87 00 00 5E 17 00 00 5D FA 00 00 5D D1 -- 0B4AE0
00 00 60 1D 00 00 5F BE 00 00 5F 5B 00 00 5E F6 -- 0B4AF0
00 00 61 75 00 00 61 2F 00 00 60 F6 00 00 60 AF -- 0B4B00
00 00 62 59 00 00 62 40 00 00 61 FC 00 00 61 C8 -- 0B4B10
00 00 63 06 00 00 62 DA 00 00 62 8A 00 00 62 70 -- 0B4B20
00 00 64 3E 00 00 64 02 00 00 63 BD 00 00 63 51 -- 0B4B30
00 00 65 22 00 00 65 14 00 00 64 FC 00 00 64 9F -- 0B4B40
00 00 67 C6 00 00 67 AF 00 00 67 94 00 00 65 D2 -- 0B4B50
00 00 68 7A 00 00 68 27 00 00 68 03 00 00 67 D8 -- 0B4B60
00 00 69 0B 00 00 68 E6 00 00 68 DA 00 00 68 C1 -- 0B4B70
00 00 6A 87 00 00 6A 54 00 00 69 BA 00 00 69 6D -- 0B4B80
00 00 6B 6A 00 00 6B 5D 00 00 6B 46 00 00 6B 1D -- 0B4B90
00 00 72 BA 00 00 72 A4 00 00 72 8A 00 00 72 5F -- 0B4BA0
00 00 73 63 00 00 73 31 00 00 73 06 00 00 72 DC -- 0B4BB0
00 00 74 E9 00 00 74 7C 00 00 74 16 00 00 73 BE -- 0B4BC0
00 00 75 DF 00 00 75 98 00 00 75 49 00 00 75 0D -- 0B4BD0
00 00 76 F5 00 00 76 AD 00 00 76 66 00 00 76 22 -- 0B4BE0
00 00 78 15 00 00 77 CD 00 00 77 86 00 00 77 3D -- 0B4BF0
78 CC 00 00 78 AC 00 00 78 78 00 00 78 52 01 FE -- 0B4C00
7B 35 00 00 7A F3 00 00 7A CF 00 00 79 54 00 00 -- 0B4C10
7B E2 00 00 7B 9B 00 00 7B 84 00 00 7B 58 00 00 -- 0B4C20
7C E7 00 00 7C B9 00 00 7C 9B 00 00 7B F9 00 00 -- 0B4C30
7D 84 00 00 7D 2F 00 00 7D 12 00 00 7C F9 00 00 -- 0B4C40
7E 75 00 00 7E 5C 00 00 7D FC 00 00 7D BC 00 00 -- 0B4C50
7F 18 00 00 7E F1 00 00 7E A6 00 00 7E 90 00 00 -- 0B4C60
81 61 00 00 7F 85 00 00 7F 60 00 00 7F 38 00 00 -- 0B4C70
82 1A 00 00 82 09 00 00 81 DF 00 00 81 90 00 00 -- 0B4C80
86 D0 00 00 82 BB 00 00 82 AE 00 00 82 52 00 00 -- 0B4C90
89 2C 00 00 88 01 00 00 87 17 00 00 86 F4 00 00 -- 0B4CA0
89 B5 00 00 89 89 00 00 89 5D 00 00 89 3D 00 00 -- 0B4CB0

8A 6C 00 00 8A 35 00 00 8A 0A 00 00 89 E0 00 00 -- 0B4CC0
8B 9F 00 00 8B 1E 00 00 8A 9E 00 00 8A 8C 00 00 -- 0B4CD0
8C 5B 00 00 8C 2D 00 00 8B D6 00 00 8B C2 00 00 -- 0B4CE0
8D 0A 00 00 8C EE 00 00 8C D7 00 00 8C A8 00 00 -- 0B4CF0
8F 74 00 00 8D A4 00 00 8D 8B 00 00 8D 72 00 00 -- 0B4D00
90 2A 00 00 90 05 00 00 8F E1 00 00 8F 99 00 00 -- 0B4D10
91 74 00 00 91 52 00 00 90 58 00 00 90 41 00 00 -- 0B4D20
91 E4 00 00 91 CF 00 00 91 B0 00 00 91 95 00 00 -- 0B4D30
92 9C 00 00 92 72 00 00 92 3E 00 00 92 04 00 00 -- 0B4D40
93 38 00 00 92 FA 00 00 92 CE 00 00 92 B4 00 00 -- 0B4D50
94 70 00 00 94 50 00 00 94 32 00 00 93 B0 00 00 -- 0B4D60
98 97 00 00 98 6D 00 00 97 BD 00 00 94 7A 00 00 -- 0B4D70
99 96 00 00 99 17 00 00 98 F7 00 00 98 C1 00 00 -- 0B4D80
9A 90 00 00 9A 74 00 00 9A 45 00 00 9A 16 00 00 -- 0B4D90
9C 92 00 00 9C 4A 00 00 9C 25 00 00 9A B8 00 00 -- 0B4DA0
9D 31 00 00 9D 1A 00 00 9C FA 00 00 9C D5 00 00 -- 0B4DB0
9E 69 00 00 9E 4E 00 00 9E 21 00 00 9E 00 00 00 -- 0B4DC0
9E D9 00 00 9E B9 00 00 9E 9C 00 00 9E 88 00 00 -- 0B4DD0
```

```
A1 01 00 00 A0 B4 00 00 9F 20 00 00 9F 14 00 00 -- 0B4DE0
A2 87 00 00 A2 29 00 00 A2 06 00 00 A1 D6 00 00 -- 0B4DF0
00 00 A2 F2 00 00 A2 D2 00 00 A2 B2 00 00 01 FE -- 0B4E00
00 00 A3 D2 00 00 A3 AB 00 00 A3 6F 00 00 A3 10 -- 0B4E10
00 00 A5 3F 00 00 A5 1C 00 00 A4 FA 00 00 A4 8E -- 0B4E20
00 00 A6 03 00 00 A5 E1 00 00 A5 A5 00 00 A5 74 -- 0B4E30
00 00 A6 BA 00 00 A6 AC 00 00 A6 3A 00 00 A6 25 -- 0B4E40
00 00 A7 5E 00 00 A7 46 00 00 A7 2C 00 00 A7 16 -- 0B4E50
00 00 AA E6 00 00 AA BF 00 00 AA 76 00 00 A7 69 -- 0B4E60
00 00 AB BE 00 00 AB 8D 00 00 AB 72 00 00 AB 2A -- 0B4E70
00 00 AC 4C 00 00 AC 31 00 00 AC 05 00 00 AB DF -- 0B4E80
00 00 AD 92 00 00 AD 1F 00 00 AC C4 00 00 AC 66 -- 0B4E90
00 00 AF 08 00 00 AE E8 00 00 AE 66 00 00 AD F9 -- 0B4EA0
00 00 AF 69 00 00 AF 54 00 00 AF 3F 00 00 AF 2A -- 0B4EB0
00 00 AF BD 00 00 AF A8 00 00 AF 93 00 00 AF 7E -- 0B4EC0
00 00 B0 11 00 00 AF FC 00 00 AF E7 00 00 AF D2 -- 0B4ED0
00 00 B0 65 00 00 B0 50 00 00 B0 3B 00 00 B0 26 -- 0B4EE0
00 00 B0 B6 00 00 B0 A2 00 00 B0 8E 00 00 B0 7A -- 0B4EF0
00 00 B1 09 00 00 B0 F4 00 00 B0 DF 00 00 B0 CA -- 0B4F00
00 00 B1 5D 00 00 B1 48 00 00 B1 33 00 00 B1 1E -- 0B4F10
00 00 B1 AE 00 00 B1 9A 00 00 B1 86 00 00 B1 72 -- 0B4F20
00 00 B1 FE 00 00 B1 EA 00 00 B1 D6 00 00 B1 C2 -- 0B4F30
00 00 B2 ED 00 00 B2 A4 00 00 B2 5B 00 00 B2 12 -- 0B4F40
00 00 B4 0F 00 00 B3 C7 00 00 B3 7E 00 00 B3 35 -- 0B4F50
00 00 B5 10 00 00 B4 F9 00 00 B4 C3 00 00 B4 57 -- 0B4F60
00 00 B5 6F 00 00 B5 54 00 00 B5 3E 00 00 B5 28 -- 0B4F70
00 00 B5 FE 00 00 B5 F3 00 00 B5 D7 00 00 B5 BB -- 0B4F80
00 00 B6 B6 00 00 B6 A0 00 00 B6 8A 00 00 B6 74 -- 0B4F90
00 00 B8 28 00 00 B7 AD 00 00 B6 E4 00 00 B6 CC -- 0B4FA0
00 00 B9 49 00 00 B9 14 00 00 B8 9D 00 00 B8 6F -- 0B4FB0
00 00 BA 3C 00 00 BA 0C 00 00 B9 D4 00 00 B9 79 -- 0B4FC0
00 00 BA BB 00 00 BA AC 00 00 BA A1 00 00 BA 5D -- 0B4FD0
00 00 BD 2D 00 00 BB E9 00 00 BB DE 00 00 BB 60 -- 0B4FE0
00 00 BE BE 00 00 BE 3F 00 00 BE 2F 00 00 BD 66 -- 0B4FF0
BF 70 00 00 BF 3C 00 00 BF 00 00 00 BE CE 01 FE -- 0B5C00
C2 2E 00 00 C2 23 00 00 C1 94 00 00 BF BA 00 00 -- 0B5010
C3 EE 00 00 C3 4E 00 00 C2 C7 00 00 C2 40 00 00 -- 0B5020
C4 6D 00 00 C4 4C 00 00 C4 22 00 00 C3 FB 00 00 -- 0B5030
C5 30 00 00 C5 1A 00 00 C4 E6 00 00 C4 79 00 00 -- 0B5040
C5 DF 00 00 C5 B6 00 00 C5 78 00 00 C5 51 00 00 -- 0B5050

C6 97 00 00 C6 6C 00 00 C6 33 00 00 C6 11 00 00 -- 0B5060
C7 6D 00 00 C7 40 00 00 C7 00 00 00 C6 D5 00 00 -- 0B5070
C8 94 00 00 C8 50 00 00 C8 03 00 00 C7 D0 00 00 -- 0B5080
C9 56 00 00 C9 31 00 00 C8 F3 00 00 C8 CE 00 00 -- 0B5090
C9 C5 00 00 C9 B8 00 00 C9 97 00 00 C9 71 00 00 -- 0B50A0
CA 75 00 00 CA 3C 00 00 CA 03 00 00 C9 E2 00 00 -- 0B50B0
CB 63 00 00 CB 2B 00 00 CA E7 00 00 CA AE 00 00 -- 0B50C0
CC 50 00 00 CC 0B 00 00 CB D3 00 00 CB 9B 00 00 -- 0B50D0
CD 09 00 00 CC D9 00 00 CC B5 00 00 CC 92 00 00 -- 0B50E0
CD 91 00 00 CD 7A 00 00 CD 6B 00 00 CD 39 00 00 -- 0B50F0
CE 6B 00 00 CE 4D 00 00 CE 1C 00 00 CD EC 00 00 -- 0B5100
D1 2D 00 00 CF 87 00 00 CF 61 00 00 CE 75 00 00 -- 0B5110
D1 BE 00 00 D1 92 00 00 D1 77 00 00 D1 45 00 00 -- 0B5120
D2 5B 00 00 D2 4E 00 00 D2 38 00 00 D2 15 00 00 -- 0B5130
D5 81 00 00 D5 26 00 00 D4 A5 00 00 D4 27 00 00 -- 0B5140
D6 BE 00 00 D6 98 00 00 D6 3D 00 00 D5 E6 00 00 -- 0B5150
D7 85 00 00 D7 55 00 00 D7 40 00 00 D7 0D 00 00 -- 0B5160
DA 76 00 00 D9 9B 00 00 D8 FC 00 00 D7 95 00 00 -- 0B5170
DC 5D 00 00 DC 34 00 00 DB F0 00 00 DB AB 00 00 -- 0B5180
```

795

```
DD  19  00  00  DC  F2  00  00  DC  CA  00  00  DC  A1  00  00  --  0B5190
DD  84  00  00  DD  6A  00  00  DD  50  00  00  DD  35  00  00  --  0B51A0
DD  FB  00  00  DD  D5  00  00  DD  C8  00  00  DD  9E  00  00  --  0B51B0
E2  94  00  00  E2  15  00  00  DE  6E  00  00  DE  61  00  00  --  0B51C0
E3  3F  00  00  E3  19  00  00  E2  F2  00  00  E2  CF  00  00  --  0B51D0
E5  53  00  00  E5  33  00  00  E5  16  00  00  E4  F9  00  00  --  0B51E0
E5  A7  00  00  E5  95  00  00  E5  7E  00  00  E5  6B  00  00  --  0B51F0
00  00  E5  FB  00  00  E5  D9  00  00  E5  C0  00  00  01  FE  --  0B5200
00  00  E6  AA  00  00  E6  94  00  00  E6  81  00  00  E6  17  --  0B5210
00  00  E7  4A  00  00  E7  38  00  00  E7  26  00  00  E6  BC  --  0B5220
00  00  E7  8F  00  00  E7  7E  00  00  E7  6D  00  00  E7  5C  --  0B5230
00  00  E8  06  00  00  E7  E8  00  00  E7  CB  00  00  E7  A2  --  0B5240
00  00  E8  FC  00  00  E8  E1  00  00  E8  BF  00  00  E8  63  --  0B5250
00  00  E9  4F  00  00  E9  39  00  00  E9  24  00  00  E9  10  --  0B5260
00  00  E9  AF  00  00  E9  97  00  00  E9  7F  00  00  E9  67  --  0B5270
00  00  EA  64  00  00  E9  FE  00  00  E9  E6  00  00  E9  C6  --  0B5280
00  00  EA  FC  00  00  EA  E6  00  00  EA  C4  00  00  EA  9E  --  0B5290
00  00  EB  92  00  00  EB  73  00  00  EB  26  00  00  EB  11  --  0B52A0
00  00  EC  D6  00  00  EC  6A  00  00  EC  4A  00  00  EB  E3  --  0B52B0
00  00  EE  F8  00  00  EE  13  00  00  ED  10  00  00  EC  EE  --  0B52C0
00  00  F0  C9  00  00  F0  7B  00  00  EF  7D  00  00  EF  39  --  0B52D0
00  00  F1  95  00  00  F1  0E  00  00  F0  F5  00  00  F0  DF  --  0B52E0
00  00  F2  CB  00  00  F1  FE  00  00  F1  E2  00  00  F1  B8  --  0B52F0
00  00  F4  94  00  00  F4  84  00  00  F3  D3  00  00  F3  9E  --  0B5300
00  00  F6  40  00  00  F6  32  00  00  F5  6D  00  00  F5  55  --  0B5310
00  00  F7  20  00  00  F7  02  00  00  F6  B0  00  00  F6  90  --  0B5320
00  00  F7  9A  00  00  F7  84  00  00  F7  62  00  00  F7  3F  --  0B5330
00  00  F8  0A  00  00  F7  D7  00  00  F7  C4  00  00  F7  AF  --  0B5340
00  00  F8  AF  00  00  F8  4E  00  00  F8  38  00  00  F8  22  --  0B5350
00  00  F9  AD  00  00  F9  90  00  00  F9  52  00  00  F9  45  --  0B5360
00  00  FA  14  00  00  F9  FC  00  00  F9  E8  00  00  F9  C0  --  0B5370
00  00  FA  74  00  00  FA  5C  00  00  FA  44  00  00  FA  2C  --  0B5380
00  00  FA  D4  00  00  FA  BC  00  00  FA  A4  00  00  FA  8C  --  0B5390
00  00  FB  34  00  00  FB  1C  00  00  FB  04  00  00  FA  EC  --  0B53A0
00  00  FB  94  00  00  FB  7C  00  00  FB  64  00  00  FB  4C  --  0B53B0
00  00  FB  F4  00  00  FB  DC  00  00  FB  C4  00  00  FB  AC  --  0B53C0
00  00  FC  55  00  00  FC  3C  00  00  FC  24  00  00  FC  0C  --  0B53D0
00  00  FC  B9  00  00  FC  A0  00  00  FC  87  00  00  FC  6E  --  0B53E0
00  00  FD  1D  00  00  FD  04  00  00  FC  EB  00  00  FC  D2  --  0B53F0

FD  81  00  00  FD  68  00  00  FD  4F  00  00  FD  36  01  FE  --  0B5400
FD  E5  00  00  FD  CC  00  00  FD  B3  00  00  FD  9A  00  00  --  0B5410
FE  49  00  00  FE  30  00  00  FE  17  00  00  FD  FE  00  00  --  0B5420
FE  AC  00  00  FE  94  00  00  FE  7B  00  00  FE  62  00  00  --  0B5430
FF  0C  00  00  FE  F4  00  00  FE  DC  00  00  FE  C4  00  00  --  0B5440
FF  6F  00  00  FF  56  00  00  FF  3D  00  00  FF  24  00  00  --  0B5450
00  A6  00  00  FF  BA  00  00  FF  A1  00  00  FF  88  00  00  --  0B5460
03  87  00  01  03  79  00  01  02  8A  00  01  01  8E  00  01  --  0B5470
05  03  00  01  04  D8  00  01  04  B6  00  01  04  4D  00  01  --  0B5480
06  0D  00  01  05  E6  00  01  05  AE  00  01  05  47  00  01  --  0B5490
06  D2  00  01  06  A5  00  01  06  6A  00  01  06  5D  00  01  --  0B54A0
07  9F  00  01  07  91  00  01  07  2B  00  01  06  E1  00  01  --  0B54B0
08  51  00  01  08  17  00  01  07  EB  00  01  07  D2  00  01  --  0B54C0
09  11  00  01  08  C4  00  01  08  94  00  01  08  78  00  01  --  0B54D0
09  72  00  01  09  5C  00  01  09  46  00  01  09  2A  00  01  --  0B54E0
0C  47  00  01  09  B1  00  01  09  A7  00  01  09  8C  00  01  --  0B54F0
0C  BD  00  01  0C  98  00  01  0C  7B  00  01  0C  61  00  01  --  0B5500
0D  8C  00  01  0D  65  00  01  0D  4A  00  01  0C  E4  00  01  --  0B5510
0E  B9  00  01  0E  8D  00  01  0E  75  00  01  0D  97  00  01  --  0B5520
0F  AD  00  01  0F  60  00  01  0F  3C  00  01  0E  E8  00  01  --  0B5530
```

EP 0 533 348 A2

```
10 DA 00 01 10 AF 00 01 10 64 00 01 10 12 00 01 -- 0B5540
11 79 00 01 11 63 00 01 11 4B 00 01 11 35 00 01 -- 0B5550
13 8F 00 01 11 E3 00 01 11 B8 00 01 11 91 00 01 -- 0B5560
16 8D 00 01 16 35 00 01 16 2A 00 01 15 52 00 01 -- 0B5570
17 EC 00 01 17 B4 00 01 17 92 00 01 17 43 00 01 -- 0B5580
18 EC 00 01 18 7F 00 01 18 64 00 01 18 06 00 01 -- 0B5590
1A 58 00 01 19 C3 00 01 19 9B 00 01 19 57 00 01 -- 0B55A0
1B 0B 00 01 1A FE 00 01 1A B3 00 01 1A 8C 00 01 -- 0B55B0
1C 09 00 01 1B E3 00 01 1B C0 00 01 1B 7C 00 01 -- 0B55C0
1C A8 00 01 1C 7A 00 01 1C 4C 00 01 1C 1F 00 01 -- 0B55D0
1D 15 00 01 1C F6 00 01 1C D8 00 01 1C BD 00 01 -- 0B55E0
1D C3 00 01 1D 80 00 01 1D 5B 00 01 1D 3D 00 01 -- 0B55F0
00 01 1E 35 00 01 1E 1D 00 01 1E 05 00 01 01 FE -- 0B5600
00 01 1E 9C 00 01 1E 82 00 01 1E 67 00 01 1E 4F -- 0B5610
00 01 1F 47 00 01 1F 23 00 01 1F 09 00 01 1E E0 -- 0B5620
00 01 1F D5 00 01 1F B9 00 01 1F A1 00 01 1F 79 -- 0B5630
00 01 20 E6 00 01 20 92 00 01 20 3C 00 01 1F E0 -- 0B5640
00 01 24 42 00 01 23 19 00 01 21 F4 00 01 21 57 -- 0B5650
00 01 25 2C 00 01 25 13 00 01 24 DC 00 01 24 9A -- 0B5660
00 01 25 C7 00 01 25 82 00 01 25 60 00 01 25 40 -- 0B5670
00 01 26 3A 00 01 26 16 00 01 25 F7 00 01 25 ED -- 0B5680
00 01 26 E6 00 01 26 BB 00 01 26 90 00 01 26 65 -- 0B5690
00 01 27 B2 00 01 27 84 00 01 27 3C 00 01 27 11 -- 0B56A0
00 01 28 AD 00 01 28 8E 00 01 28 42 00 01 28 01 -- 0B56B0
00 01 29 2B 00 01 29 10 00 01 28 F0 00 01 28 CF -- 0B56C0
00 01 2A 38 00 01 29 FF 00 01 29 C7 00 01 29 87 -- 0B56D0
00 01 2A EF 00 01 2A C1 00 01 2A 92 00 01 2A 6B -- 0B56E0
00 01 2B 83 00 01 2B 57 00 01 2B 49 00 01 2B 2F -- 0B56F0
00 01 2B DF 00 01 2B C7 00 01 2B B2 00 01 2B 9B -- 0B5700
00 01 2D 73 00 01 2C B3 00 01 2C 97 00 01 2C 39 -- 0B5710
00 01 2E 1A 00 01 2E 04 00 01 2D EF 00 01 2D B1 -- 0B5720
00 01 2E E7 00 01 2E 75 00 01 2E 60 00 01 2E 41 -- 0B5730
00 01 30 EC 00 01 2F 94 00 01 2F 7A 00 01 2F 4F -- 0B5740
00 01 31 AE 00 01 31 A0 00 01 31 88 00 01 31 50 -- 0B5750
00 01 36 1C 00 01 35 01 00 01 34 D4 00 01 34 41 -- 0B5760
00 01 37 28 00 01 36 D3 00 01 36 A7 00 01 36 6E -- 0B5770
00 01 38 83 00 01 38 20 00 01 37 92 00 01 37 52 -- 0B5780
00 01 39 77 00 01 39 3A 00 01 39 20 00 01 38 8F -- 0B5790

00 01 3A 34 00 01 3A 16 00 01 39 FF 00 01 39 8F -- 0B57A0
00 01 3A B6 00 01 3A 99 00 01 3A 81 00 01 3A 67 -- 0B57B0
00 01 3B 31 00 01 3B 1E 00 01 3A F0 00 01 3A D4 -- 0B57C0
00 01 3B D3 00 01 3B AD 00 01 3B 7F 00 01 3B 57 -- 0B57D0
00 01 3C 5E 00 01 3C 54 00 01 3C 17 00 01 3B FA -- 0B57E0
00 01 3C B4 00 01 3C A8 00 01 3C 91 00 01 3C 7B -- 0B57F0
41 21 00 01 40 F7 00 01 40 DE 00 01 40 AE 01 FE -- 0B5800
43 95 00 01 43 75 00 01 43 15 00 01 42 ED 00 01 -- 0B5810
43 F2 00 01 43 DC 00 01 43 C6 00 01 43 AF 00 01 -- 0B5820
44 9A 00 01 44 4A 00 01 44 2F 00 01 44 08 00 01 -- 0B5830
45 30 00 01 45 06 00 01 44 E4 00 01 44 BB 00 01 -- 0B5840
47 95 00 01 46 72 00 01 46 26 00 01 45 ED 00 01 -- 0B5850
49 2B 00 01 48 FA 00 01 48 94 00 01 48 45 00 01 -- 0B5860
49 F3 00 01 49 C2 00 01 49 90 00 01 49 67 00 01 -- 0B5870
4A 57 00 01 4A 3E 00 01 4A 25 00 01 4A 0C 00 01 -- 0B5880
4A DA 00 01 4A A2 00 01 4A 8A 00 01 4A 70 00 01 -- 0B5890
4B EE 00 01 4B CF 00 01 4B 78 00 01 4B 02 00 01 -- 0B58A0
4C A1 00 01 4C 7E 00 01 4C 68 00 01 4C 2C 00 01 -- 0B58B0
4D 44 00 01 4D 10 00 01 4C F1 00 01 4C D7 00 01 -- 0B58C0
4E 64 00 01 4E 54 00 01 4D 6B 00 01 4D 5F 00 01 -- 0B58D0
51 9A 00 01 51 85 00 01 50 81 00 01 50 5C 00 01 -- 0B58E0
```

797

```
54 17 00 01 53 2B 00 01 52 AA 00 01 51 AA 00 01 -- 0B58F0
55 69 00 01 54 A4 00 01 54 98 00 01 54 71 00 01 -- 0B5900
55 F5 00 01 55 DE 00 01 55 8B 00 01 55 7D 00 01 -- 0B5910
56 68 00 01 56 36 00 01 56 26 00 01 56 05 00 01 -- 0B5920
56 DA 00 01 56 B8 00 01 56 95 00 01 56 85 00 01 -- 0B5930
57 3E 00 01 57 1C 00 01 57 0C 00 01 56 EA 00 01 -- 0B5940
57 8A 00 01 57 72 00 01 57 5A 00 01 57 4F 00 01 -- 0B5950
58 43 00 01 58 1D 00 01 57 EF 00 01 57 C6 00 01 -- 0B5960
59 72 00 01 58 ED 00 01 58 C6 00 01 58 53 00 01 -- 0B5970
5B F8 00 01 5A AF 00 01 5A 9F 00 01 59 E5 00 01 -- 0B5980
5C 8D 00 01 5C 72 00 01 5C 56 00 01 5C 30 00 01 -- 0B5990
5E 28 00 01 5D AB 00 01 5C E4 00 01 5C B3 00 01 -- 0B59A0
5E C6 00 01 5E B8 00 01 5E A0 00 01 5E 7A 00 01 -- 0B59B0
5F 96 00 01 5F 54 00 01 5F 0A 00 01 5E DE 00 01 -- 0B59C0
60 9E 00 01 60 68 00 01 60 43 00 01 5F E7 00 01 -- 0B59D0
64 A9 00 01 64 93 00 01 61 1B 00 01 61 0F 00 01 -- 0B59E0
65 89 00 01 65 0D 00 01 64 E0 00 01 64 C7 00 01 -- 0B59F0
00 01 65 C6 00 01 65 AE 00 01 65 9B 00 01 01 FE -- 0B5A00
00 01 66 4F 00 01 66 1E 00 01 66 09 00 01 65 F5 -- 0B5A10
00 01 68 77 00 01 68 32 00 01 66 FF 00 01 66 C6 -- 0B5A20
00 01 6A 0B 00 01 69 E1 00 01 69 C3 00 01 69 AC -- 0B5A30
00 01 6A E0 00 01 6A 87 00 01 6A 57 00 01 6A 3A -- 0B5A40
00 01 6D 44 00 01 6C DD 00 01 6C 16 00 01 6B 40 -- 0B5A50
00 01 6E 17 00 01 6D C9 00 01 6D A6 00 01 6D 87 -- 0B5A60
00 01 6F B7 00 01 6F 40 00 01 6E FB 00 01 6E 84 -- 0B5A70
00 01 72 6A 00 01 71 A9 00 01 70 E8 00 01 6F DD -- 0B5A80
00 01 74 50 00 01 73 2F 00 01 73 1F 00 01 72 AD -- 0B5A90
00 01 74 B5 00 01 74 9D 00 01 74 86 00 01 74 64 -- 0B5AA0
00 01 76 42 00 01 74 FB 00 01 74 E4 00 01 74 CB -- 0B5AB0
00 01 77 5B 00 01 77 30 00 01 77 16 00 01 76 5F -- 0B5AC0
00 01 79 5F 00 01 79 3F 00 01 77 9E 00 01 77 85 -- 0B5AD0
00 01 7A 4C 00 01 7A 05 00 01 79 CC 00 01 79 80 -- 0B5AE0
00 01 7B 63 00 01 7B 37 00 01 7A CC 00 01 7A 84 -- 0B5AF0
00 01 7C 47 00 01 7B CD 00 01 7B B1 00 01 7B 7E -- 0B5B00
00 01 7D C3 00 01 7D 55 00 01 7D 0E 00 01 7C 85 -- 0B5B10
00 01 7F 02 00 01 7E 9D 00 01 7E 90 00 01 7E 16 -- 0B5B20
00 01 7F FF 00 01 7F CA 00 01 7F 79 00 01 7F 15 -- 0B5B30

00 01 81 55 00 01 81 28 00 01 80 E2 00 01 80 32 -- 0B5B40
00 01 82 6B 00 01 81 A5 00 01 81 99 00 01 81 6E -- 0B5B50
00 01 83 06 00 01 82 E6 00 01 82 C5 00 01 82 9D -- 0B5B60
00 01 83 91 00 01 83 73 00 01 83 54 00 01 83 21 -- 0B5B70
00 01 84 15 00 01 83 EE 00 01 83 D0 00 01 83 B1 -- 0B5B80
00 01 85 88 00 01 84 D9 00 01 84 C2 00 01 84 95 -- 0B5B90
00 01 86 57 00 01 86 2E 00 01 85 EA 00 01 85 DA -- 0B5BA0
00 01 89 29 00 01 88 56 00 01 87 75 00 01 86 62 -- 0B5BB0
00 01 8A 42 00 01 89 FB 00 01 89 95 00 01 89 52 -- 0B5BC0
00 01 8F F4 00 01 8B 06 00 01 8A F8 00 01 8A 81 -- 0B5BD0
00 01 90 AA 00 01 90 75 00 01 90 44 00 01 90 1F -- 0B5BE0
00 01 91 A9 00 01 91 67 00 01 91 37 00 01 91 0B -- 0B5BF0
92 53 00 01 92 2C 00 01 92 01 00 01 91 D1 01 FE -- 0B5C00
93 27 00 01 92 EE 00 01 92 BF 00 01 92 99 00 01 -- 0B5C10
94 17 00 01 93 BF 00 01 93 81 00 01 93 5A 00 01 -- 0B5C20
95 47 00 01 94 DE 00 01 94 BC 00 01 94 63 00 01 -- 0B5C30
96 FE 00 01 95 B5 00 01 95 A6 00 01 95 74 00 01 -- 0B5C40
97 E6 00 01 97 A2 00 01 97 7D 00 01 97 55 00 01 -- 0B5C50
98 B7 00 01 98 A1 00 01 98 50 00 01 98 0F 00 01 -- 0B5C60
99 82 00 01 99 35 00 01 98 F3 00 01 98 CE 00 01 -- 0B5C70
9B 3A 00 01 9B 0C 00 01 9A 59 00 01 99 A9 00 01 -- 0B5C80
9D 21 00 01 9C CC 00 01 9C 17 00 01 9B 64 00 01 -- 0B5C90
```

```
9E 28 00 01 9E 01 00 01 9D D7 00 01 9D 76 00 01 -- 0B5CA0
A0 51 00 01 9F 9E 00 01 9E EE 00 01 9E 67 00 01 -- 0B5CB0
A2 6F 00 01 A2 08 00 01 A1 57 00 01 A1 26 00 01 -- 0B5CC0
A3 8F 00 01 A3 80 00 01 A3 15 00 01 A2 C2 00 01 -- 0B5CD0
A4 61 00 01 A4 4A 00 01 A4 25 00 01 A3 F4 00 01 -- 0B5CE0
A4 C3 00 01 A4 AC 00 01 A4 95 00 01 A4 7E 00 01 -- 0B5CF0
A5 28 00 01 A5 0E 00 01 A4 F1 00 01 A4 DA 00 01 -- 0B5D00
A5 88 00 01 A5 70 00 01 A5 58 00 01 A5 40 00 01 -- 0B5D10
A5 ED 00 01 A5 D0 00 01 A5 B8 00 01 A5 A0 00 01 -- 0B5D20
A6 FC 00 01 A6 D5 00 01 A6 13 00 01 A6 04 00 01 -- 0B5D30
A9 0E 00 01 A8 CA 00 01 A8 79 00 01 A8 24 00 01 -- 0B5D40
A9 85 00 01 A9 66 00 01 A9 46 00 01 A9 27 00 01 -- 0B5D50
AA 5E 00 01 AA 14 00 01 A9 EC 00 01 A9 A8 00 01 -- 0B5D60
AB 9D 00 01 AB 70 00 01 AA DC 00 01 AA CF 00 01 -- 0B5D70
AD 42 00 01 AD 2D 00 01 AC A0 00 01 AB CA 00 01 -- 0B5D80
AE 65 00 01 AE 0E 00 01 AD FF 00 01 AD E3 00 01 -- 0B5D90
B0 5D 00 01 AF C0 00 01 AF 44 00 01 AF 06 00 01 -- 0B5DA0
B3 25 00 01 B2 E1 00 01 B2 7F 00 01 B1 1E 00 01 -- 0B5DB0
B4 8F 00 01 B4 2F 00 01 B3 F0 00 01 B3 C3 00 01 -- 0B5DC0
B4 D1 00 01 B4 C4 00 01 B4 A8 00 01 B4 94 00 01 -- 0B5DD0
B5 EE 00 01 B5 D1 00 01 B5 B8 00 01 B5 83 00 01 -- 0B5DE0
B7 4F 00 01 B7 2C 00 01 B6 D1 00 01 B6 1C 00 01 -- 0B5DF0
00 01 B7 D6 00 01 B7 AB 00 01 B7 75 00 01 01 FE -- 0B5E00
00 01 B9 28 00 01 B8 B2 00 01 B8 17 00 01 B7 F2 -- 0B5E10
00 01 BA 12 00 01 B9 E3 00 01 B9 78 00 01 B9 6B -- 0B5E20
00 01 BA A5 00 01 BA 76 00 01 BA 3E 00 01 BA 29 -- 0B5E30
00 01 BB 30 00 01 BA FD 00 01 BA DD 00 01 BA BB -- 0B5E40
00 01 BB ED 00 01 BB A7 00 01 BB 7C 00 01 BB 56 -- 0B5E50
00 01 BD 06 00 01 BC E2 00 01 BC BD 00 01 BC 71 -- 0B5E60
00 01 BD 84 00 01 BD 6D 00 01 BD 5E 00 01 BD 3C -- 0B5E70
00 01 BE 5D 00 01 BE 0D 00 01 BD DB 00 01 BD CC -- 0B5E80
00 01 BF 08 00 01 BE D8 00 01 BE 91 00 01 BE 69 -- 0B5E90
00 01 BF 86 00 01 BF 62 00 01 BF 44 00 01 BF 25 -- 0B5EA0
00 01 C0 6E 00 01 C0 31 00 01 BF C2 00 01 BF 8F -- 0B5EB0
00 01 C1 5D 00 01 C1 2F 00 01 C1 03 00 01 C0 CE -- 0B5EC0
00 01 C2 16 00 01 C1 BF 00 01 C1 96 00 01 C1 69 -- 0B5ED0

00 01 C3 F0 00 01 C3 E2 00 01 C3 9F 00 01 C3 1D -- 0B5EE0
00 01 C5 DE 00 01 C5 CC 00 01 C5 7F 00 01 C4 22 -- 0B5EF0
00 01 C6 DA 00 01 C6 8C 00 01 C6 7F 00 01 C6 06 -- 0B5F00
00 01 C7 66 00 01 C7 4C 00 01 C7 19 00 01 C6 F8 -- 0B5F10
00 01 C7 EF 00 01 C7 DA 00 01 C7 C7 00 01 C7 81 -- 0B5F20
00 01 C8 51 00 01 C8 38 00 01 C8 1E 00 01 C8 06 -- 0B5F30
00 01 C8 BF 00 01 C8 A8 00 01 C8 9B 00 01 C8 6A -- 0B5F40
00 01 C9 39 00 01 C9 27 00 01 C9 17 00 01 C9 07 -- 0B5F50
00 01 C9 94 00 01 C9 7B 00 01 C9 62 00 01 C9 49 -- 0B5F60
00 01 CA 1B 00 01 CA 0B 00 01 C9 E6 00 01 C9 B6 -- 0B5F70
00 01 CB 68 00 01 CB 5A 00 01 CB 19 00 01 CA CA -- 0B5F80
00 01 CC 3E 00 01 CC 1D 00 01 CC 18 00 01 CB 9A -- 0B5F90
00 01 CC B1 00 01 CC 6E 00 01 CC 5C 00 01 CC 4F -- 0B5FA0
00 01 CD 20 00 01 CD 01 00 01 CC E1 00 01 CC D3 -- 0B5FB0
00 01 CD D1 00 01 CD A4 00 01 CD 75 00 01 CD 53 -- 0B5FC0
00 01 CF 67 00 01 CF 33 00 01 CE 84 00 01 CD F5 -- 0B5FD0
00 01 D1 09 00 01 D0 B3 00 01 D0 3A 00 01 CF DE -- 0B5FE0
00 01 D1 B5 00 01 D1 7F 00 01 D1 52 00 01 D1 17 -- 0B5FF0
D4 D3 00 01 D2 47 00 01 D2 39 00 01 D1 EF 01 FE -- 0B6000
D7 43 00 01 D6 82 00 01 D5 BA 00 01 D5 A9 00 01 -- 0B6010
D7 B7 00 01 D7 9F 00 01 D7 7A 00 01 D7 68 00 01 -- 0B6020
D8 10 00 01 D7 EB 00 01 D7 D6 00 01 D7 C2 00 01 -- 0B6030
D8 85 00 01 D8 70 00 01 D8 50 00 01 D8 31 00 01 -- 0B6040
```

```
D9 7D 00 01 D9 59 00 01 D9 29 00 01 D8 D6 00 01 -- 0B6050
DA 54 00 01 DA 3E 00 01 DA 02 00 01 D9 B2 00 01 -- 0B6060
DB 1C 00 01 DA EB 00 01 DA B6 00 01 DA 79 00 01 -- 0B6070
DC 0C 00 01 DB C6 00 01 DB 87 00 01 DB 49 00 01 -- 0B6080
DC EA 00 01 DC AE 00 01 DC 74 00 01 DC 4D 00 01 -- 0B6090
DD 86 00 01 DD 74 00 01 DD 49 00 01 DD 25 00 01 -- 0B60A0
DE 57 00 01 DE 19 00 01 DD F1 00 01 DD BD 00 01 -- 0B60B0
DE B6 00 01 DE 9F 00 01 DE 8C 00 01 DE 7D 00 01 -- 0B60C0
DF 1C 00 01 DF 01 00 01 DE EA 00 01 DE CE 00 01 -- 0B60D0
DF 71 00 01 DF 5E 00 01 DF 4C 00 01 DF 32 00 01 -- 0B60E0
DF C0 00 01 DF AD 00 01 DF 9B 00 01 DF 84 00 01 -- 0B60F0
E0 16 00 01 E0 02 00 01 DF EE 00 01 DF D8 00 01 -- 0B6100
E0 70 00 01 E0 5A 00 01 E0 46 00 01 E0 31 00 01 -- 0B6110
E0 D1 00 01 E0 B8 00 01 E0 A2 00 01 E0 86 00 01 -- 0B6120
E1 38 00 01 E1 1C 00 01 E1 03 00 01 E0 ED 00 01 -- 0B6130
E1 9F 00 01 E1 85 00 01 E1 6B 00 01 E1 54 00 01 -- 0B6140
E2 02 00 01 E1 E7 00 01 E1 CE 00 01 E1 B8 00 01 -- 0B6150
E2 6A 00 01 E2 51 00 01 E2 35 00 01 E2 1C 00 01 -- 0B6160
E2 DC 00 01 E2 C1 00 01 E2 A5 00 01 E2 88 00 01 -- 0B6170
E3 3E 00 01 E3 28 00 01 E3 0F 00 01 E2 F6 00 01 -- 0B6180
E3 9A 00 01 E3 82 00 01 E3 6C 00 01 E3 54 00 01 -- 0B6190
E4 08 00 01 E3 EC 00 01 E3 D2 00 01 E3 B5 00 01 -- 0B61A0
E4 67 00 01 E4 51 00 01 E4 3C 00 01 E4 21 00 01 -- 0B61B0
E4 BD 00 01 E4 A9 00 01 E4 92 00 01 E4 7C 00 01 -- 0B61C0
E5 12 00 01 E4 FA 00 01 E4 E7 00 01 E4 D4 00 01 -- 0B61D0
E5 64 00 01 E5 51 00 01 E5 3F 00 01 E5 29 00 01 -- 0B61E0
E5 B7 00 01 E5 A0 00 01 E5 89 00 01 E5 76 00 01 -- 0B61F0
00 01 E6 08 00 01 E5 EE 00 01 E5 D3 00 01 01 FE -- 0B6200
00 01 E6 6C 00 01 E6 52 00 01 E6 38 00 01 E6 20 -- 0B6210
00 01 E6 CE 00 01 E6 B7 00 01 E6 A0 00 01 E6 85 -- 0B6220
00 01 E7 33 00 01 E7 1B 00 01 E7 00 00 01 E6 E9 -- 0B6230
00 01 E7 97 00 01 E7 7F 00 01 E7 6C 00 01 E7 4E -- 0B6240
00 01 E7 EF 00 01 E7 D5 00 01 E7 C1 00 01 E7 AE -- 0B6250
00 01 E8 4E 00 01 E8 39 00 01 E8 21 00 01 E8 04 -- 0B6260
00 01 E8 B6 00 01 E8 96 00 01 E8 80 00 01 E8 6C -- 0B6270

00 01 E9 34 00 01 E9 10 00 01 E8 F3 00 01 E8 D4 -- 0B6280
00 01 E9 93 00 01 E9 83 00 01 E9 6C 00 01 E9 50 -- 0B6290
00 01 E9 F6 00 01 E9 DE 00 01 E9 C8 00 01 E9 AF -- 0B62A0
00 01 EA 60 00 01 EA 45 00 01 EA 28 00 01 EA 0E -- 0B62B0
00 01 EA C6 00 01 EA AC 00 01 EA 92 00 01 EA 78 -- 0B62C0
00 01 EB 30 00 01 EB 22 00 01 EB 06 00 01 EA E6 -- 0B62D0
00 01 EB 8E 00 01 EB 73 00 01 EB 5E 00 01 EB 47 -- 0B62E0
00 01 EB F4 00 01 EB D9 00 01 EB BC 00 01 EB A6 -- 0B62F0
00 01 EC 4D 00 01 EC 39 00 01 EC 23 00 01 EC 0B -- 0B6300
00 01 EC B6 00 01 EC A1 00 01 EC 86 00 01 EC 6A -- 0B6310
00 01 ED 16 00 01 ED 00 00 01 EC E5 00 01 EC CE -- 0B6320
00 01 ED 81 00 01 ED 68 00 01 ED 4F 00 01 ED 33 -- 0B6330
00 01 ED DE 00 01 ED C7 00 01 ED B0 00 01 ED 98 -- 0B6340
00 01 EE 40 00 01 EE 2A 00 01 EE 14 00 01 ED F9 -- 0B6350
00 01 EE 96 00 01 EE 7F 00 01 EE 68 00 01 EE 52 -- 0B6360
00 01 EE EE 00 01 EE DA 00 01 EE C6 00 01 EE AB -- 0B6370
00 01 EF 57 00 01 EF 3B 00 01 EF 26 00 01 EF 05 -- 0B6380
00 01 EF B7 00 01 EF 9A 00 01 EF 85 00 01 EF 6C -- 0B6390
00 01 F0 13 00 01 EF FD 00 01 EF E6 00 01 EF CD -- 0B63A0
00 01 F0 6A 00 01 F0 5A 00 01 F0 42 00 01 F0 2D -- 0B63B0
00 01 F0 D6 00 01 F0 BC 00 01 F0 9D 00 01 F0 81 -- 0B63C0
00 01 F1 40 00 01 F1 23 00 01 F1 0A 00 01 F0 EF -- 0B63D0
00 01 F1 9D 00 01 F1 85 00 01 F1 78 00 01 F1 5C -- 0B63E0
00 01 F2 04 00 01 F1 EC 00 01 F1 D3 00 01 F1 BA -- 0B63F0
```

800

```
F2 69 00 01 F2 50 00 01 F2 37 00 01 F2 1B 01 FE -- 0B6400
F2 CC 00 01 F2 AF 00 01 F2 93 00 01 F2 80 00 01 -- 0B6410
F3 41 00 01 F3 25 00 01 F3 08 00 01 F2 EA 00 01 -- 0B6420
F3 A7 00 01 F3 69 00 01 F3 5D 00 01 F3 46 00 01 -- 0B6430
F4 97 00 01 F4 17 00 01 F4 08 00 01 F3 E3 00 01 -- 0B6440
F6 4A 00 01 F5 AC 00 01 F5 3D 00 01 F4 EB 00 01 -- 0B6450
F7 BE 00 01 F7 47 00 01 F7 05 00 01 F6 90 00 01 -- 0B6460
F9 3D 00 01 F8 DD 00 01 F8 9C 00 01 F8 2F 00 01 -- 0B6470
FA 69 00 01 FA 5B 00 01 FA 26 00 01 F9 F6 00 01 -- 0B6480
FC A7 00 01 FC 34 00 01 FB 82 00 01 FB 07 00 01 -- 0B6490
FE B8 00 01 FD EC 00 01 FD 51 00 01 FC E8 00 01 -- 0B64A0
05 09 00 02 02 C4 00 02 01 8A 00 02 00 1B 00 01 -- 0B64B0
08 6F 00 02 07 C8 00 02 07 92 00 02 06 30 00 02 -- 0B64C0
09 17 00 02 09 09 00 02 08 D7 00 02 08 CC 00 02 -- 0B64D0
09 BE 00 02 09 9E 00 02 09 81 00 02 09 5F 00 02 -- 0B64E0
0A A5 00 02 0A 60 00 02 0A 3E 00 02 09 F6 00 02 -- 0B64F0
0B B2 00 02 0B 77 00 02 0B 3E 00 02 0A EA 00 02 -- 0B6500
0C 8F 00 02 0C 46 00 02 0C 25 00 02 0B EE 00 02 -- 0B6510
0D 5A 00 02 0D 04 00 02 0C D8 00 02 0C AB 00 02 -- 0B6520
0E 6E 00 02 0E 3C 00 02 0E 03 00 02 0D B0 00 02 -- 0B6530
0F E8 00 02 0F C1 00 02 0F B4 00 02 0F 0D 00 02 -- 0B6540
11 C1 00 02 10 DD 00 02 10 1C 00 02 10 10 00 02 -- 0B6550
14 15 00 02 13 C7 00 02 13 1B 00 02 12 BB 00 02 -- 0B6560
16 61 00 02 16 21 00 02 15 31 00 02 14 B0 00 02 -- 0B6570
18 66 00 02 17 DE 00 02 17 59 00 02 17 26 00 02 -- 0B6580
1C 34 00 02 1A 8B 00 02 19 D8 00 02 18 D2 00 02 -- 0B6590
1E 97 00 02 1E 10 00 02 1D 32 00 02 1C C1 00 02 -- 0B65A0
23 DB 00 02 22 81 00 02 20 88 00 02 20 11 00 02 -- 0B65B0
24 A2 00 02 24 7E 00 02 24 36 00 02 24 2C 00 02 -- 0B65C0
25 C0 00 02 25 58 00 02 25 21 00 02 24 EA 00 02 -- 0B65D0
27 A4 00 02 27 20 00 02 26 8C 00 02 26 1C 00 02 -- 0B65E0
29 B1 00 02 29 11 00 02 28 71 00 02 28 28 00 02 -- 0B65F0
00 02 2B 14 00 02 2A EC 00 02 2A 4F 00 02 01 FE -- 0B6600
00 02 2B B7 00 02 2B A2 00 02 2B 97 00 02 2B 55 -- 0B6610

00 02 2C 99 00 02 2C 7A 00 02 2C 6E 00 02 2C 12 -- 0B6620
00 02 2D AD 00 02 2D 5F 00 02 2D 02 00 02 2C A6 -- 0B6630
00 02 2E B5 00 02 2E 6A 00 02 2E 10 00 02 2D B7 -- 0B6640
00 02 2F 36 00 02 2F 0D 00 02 2F 04 00 02 2E C3 -- 0B6650
00 02 30 76 00 02 2F 7F 00 02 2F 74 00 02 2F 55 -- 0B6660
00 02 32 D4 00 02 31 B8 00 02 30 B2 00 02 30 A4 -- 0B6670
00 02 34 8F 00 02 34 68 00 02 34 5A 00 02 33 31 -- 0B6680
00 02 35 5B 00 02 35 16 00 02 34 CF 00 02 34 9E -- 0B6690
00 02 36 F4 00 02 36 78 00 02 36 16 00 02 35 68 -- 0B66A0
00 02 38 C9 00 02 38 84 00 02 37 E3 00 02 37 76 -- 0B66B0
00 02 3B 18 00 02 3A 45 00 02 39 98 00 02 39 43 -- 0B66C0
00 02 3C FC 00 02 3C 7F 00 02 3C 3F 00 02 3B B1 -- 0B66D0
00 02 3D CE 00 02 3D 80 00 02 3D 43 00 02 3D 07 -- 0B66E0
00 02 3F 0C 00 02 3E BD 00 02 3E 6E 00 02 3E 1D -- 0B66F0
00 02 3F EA 00 02 3F DE 00 02 3F 69 00 02 3F 5A -- 0B6700
00 02 40 7C 00 02 40 59 00 02 40 4C 00 02 3F FB -- 0B6710
00 02 41 46 00 02 41 1A 00 02 41 0F 00 02 40 C5 -- 0B6720
00 02 41 B6 00 02 41 83 00 02 41 76 00 02 41 52 -- 0B6730
00 02 42 4A 00 02 41 F1 00 02 41 DC 00 02 41 CB -- 0B6740
00 02 42 DD 00 02 42 CC 00 02 42 B7 00 02 42 5F -- 0B6750
00 02 43 29 00 02 43 17 00 02 43 02 00 02 42 F2 -- 0B6760
24 CC 00 05 00 02 43 54 00 02 43 4F 00 02 43 34 -- 0B6770
00 00 00 3C 00 00 00 28 00 00 00 15 00 00 00 02 -- 0B6780
00 00 00 7B 00 00 00 70 00 00 00 62 00 00 00 4D -- 0B6790
00 00 00 BE 00 00 00 AE 00 00 00 9B 00 00 00 88 -- 0B67A0
```

```
00 00 00 F4 00 00 00 E4 00 00 00 D7 00 00 00 CA  --  0B67B0
00 00 01 3F 00 00 01 2D 00 00 01 1B 00 00 01 04  --  0B67C0
00 00 01 83 00 00 01 69 00 00 01 5D 00 00 01 4B  --  0B67D0
00 00 01 D1 00 00 01 C2 00 00 01 A6 00 00 01 94  --  0B67E0
00 00 02 15 00 00 02 07 00 00 01 F9 00 00 01 E0  --  0B67F0
02 5B 00 00 02 4D 00 00 02 3A 00 00 02 25 01 FE  --  0B6800
02 A5 00 00 02 93 00 00 02 7D 00 00 02 6C 00 00  --  0B6810
02 ED 00 00 02 D9 00 00 02 C6 00 00 02 B4 00 00  --  0B6820
03 39 00 00 03 27 00 00 03 14 00 00 02 FF 00 00  --  0B6830
03 84 00 00 03 6B 00 00 03 5A 00 00 03 49 00 00  --  0B6840
03 DC 00 00 03 C6 00 00 03 B0 00 00 03 9A 00 00  --  0B6850
04 36 00 00 04 21 00 00 04 07 00 00 03 F3 00 00  --  0B6860
04 86 00 00 04 6A 00 00 04 5B 00 00 04 47 00 00  --  0B6870
04 D4 00 00 04 C2 00 00 04 A8 00 00 04 94 00 00  --  0B6880
05 1B 00 00 05 0D 00 00 04 F7 00 00 04 E6 00 00  --  0B6890
05 6A 00 00 05 59 00 00 05 42 00 00 05 2C 00 00  --  0B68A0
05 BB 00 00 05 9F 00 00 05 90 00 00 05 7A 00 00  --  0B68B0
06 08 00 00 05 F9 00 00 05 EA 00 00 05 CD 00 00  --  0B68C0
06 5B 00 00 06 42 00 00 06 2A 00 00 06 1C 00 00  --  0B68D0
06 A9 00 00 06 9A 00 00 06 82 00 00 06 6A 00 00  --  0B68E0
06 F8 00 00 06 E7 00 00 06 D5 00 00 06 BF 00 00  --  0B68F0
07 3F 00 00 07 28 00 00 07 18 00 00 07 08 00 00  --  0B6900
07 91 00 00 07 7E 00 00 07 67 00 00 07 57 00 00  --  0B6910
07 ED 00 00 07 D5 00 00 07 BD 00 00 07 A7 00 00  --  0B6920
08 51 00 00 08 32 00 00 08 1F 00 00 08 05 00 00  --  0B6930
08 A2 00 00 08 86 00 00 08 74 00 00 08 64 00 00  --  0B6940
08 F4 00 00 08 D6 00 00 08 C8 00 00 08 B7 00 00  --  0B6950
09 45 00 00 09 32 00 00 09 18 00 00 09 02 00 00  --  0B6960
09 8C 00 00 09 7A 00 00 09 6C 00 00 09 58 00 00  --  0B6970
09 D9 00 00 09 BF 00 00 09 AF 00 00 09 9D 00 00  --  0B6980
0A 38 00 00 0A 24 00 00 0A 09 00 00 09 F2 00 00  --  0B6990
0A 87 00 00 0A 78 00 00 0A 5E 00 00 0A 46 00 00  --  0B69A0
0A D8 00 00 0A C1 00 00 0A B3 00 00 0A 99 00 00  --  0B69B0

0B 2F 00 00 0B 1F 00 00 0B 03 00 00 0A EC 00 00  --  0B69C0
0B 82 00 00 0B 71 00 00 0B 5F 00 00 0B 4B 00 00  --  0B69D0
0B ED 00 00 0B D1 00 00 0B B9 00 00 0B 96 00 00  --  0B69E0
0C 36 00 00 0C 28 00 00 0C 0F 00 00 0C 00 00 00  --  0B69F0
00 00 0C 6A 00 00 0C 5A 00 00 0C 47 00 00 01 FE  --  0B6A00
00 00 0C CC 00 00 0C B3 00 00 0C 9B 00 00 0C 81  --  0B6A10
00 00 0D 21 00 00 0D 10 00 00 0C FA 00 00 0C E8  --  0B6A20
00 00 0D 72 00 00 0D 5F 00 00 0D 4A 00 00 0D 30  --  0B6A30
00 00 0D CF 00 00 0D BE 00 00 0D A8 00 00 0D 8A  --  0B6A40
00 00 0E 17 00 00 0D FB 00 00 0D EC 00 00 0D DE  --  0B6A50
00 00 0E 65 00 00 0E 55 00 00 0E 3E 00 00 0E 2E  --  0B6A60
00 00 0E AC 00 00 0E 9A 00 00 0E 85 00 00 0E 75  --  0B6A70
00 00 0E EC 00 00 0E DB 00 00 0E CD 00 00 0E B8  --  0B6A80
00 00 0F 30 00 00 0F 20 00 00 0F 0E 00 00 0E FD  --  0B6A90
00 00 0F 7D 00 00 0F 69 00 00 0F 59 00 00 0F 47  --  0B6AA0
00 00 0F D1 00 00 0F BC 00 00 0F A6 00 00 0F 94  --  0B6AB0
00 00 10 23 00 00 10 0F 00 00 0F F8 00 00 0F DF  --  0B6AC0
00 00 10 6D 00 00 10 5B 00 00 10 47 00 00 10 37  --  0B6AD0
00 00 10 BA 00 00 10 9E 00 00 10 92 00 00 10 81  --  0B6AE0
00 00 11 11 00 00 10 FC 00 00 10 E6 00 00 10 CE  --  0B6AF0
00 00 11 68 00 00 11 55 00 00 11 3C 00 00 11 27  --  0B6B00
00 00 11 BD 00 00 11 A7 00 00 11 93 00 00 11 80  --  0B6B10
00 00 12 0E 00 00 11 F9 00 00 11 E6 00 00 11 D0  --  0B6B20
00 00 12 61 00 00 12 4F 00 00 12 38 00 00 12 21  --  0B6B30
00 00 12 AB 00 00 12 95 00 00 12 88 00 00 12 75  --  0B6B40
00 00 13 07 00 00 12 EB 00 00 12 D5 00 00 12 C5  --  0B6B50
```

```
00 00 13 67 00 00 13 4F 00 00 13 39 00 00 13 1D -- 0B6B60
00 00 13 C4 00 00 13 AE 00 00 13 9D 00 00 13 81 -- 0B6B70
00 00 14 1B 00 00 14 08 00 00 13 EF 00 00 13 D7 -- 0B6B80
00 00 14 78 00 00 14 5F 00 00 14 43 00 00 14 30 -- 0B6B90
00 00 14 DE 00 00 14 CB 00 00 14 B8 00 00 14 92 -- 0B6BA0
00 00 15 2C 00 00 15 1C 00 00 15 07 00 00 14 F6 -- 0B6BB0
00 00 15 73 00 00 15 64 00 00 15 54 00 00 15 3F -- 0B6BC0
00 00 15 BB 00 00 15 A6 00 00 15 95 00 00 15 82 -- 0B6BD0
00 00 16 0D 00 00 15 F2 00 00 15 E2 00 00 15 D3 -- 0B6BE0
00 00 16 57 00 00 16 47 00 00 16 38 00 00 16 1F -- 0B6BF0
16 A4 00 00 16 93 00 00 16 7C 00 00 16 6E 01 FE -- 0B6C00
16 F0 00 00 16 D9 00 00 16 C7 00 00 16 B9 00 00 -- 0B6C10
17 3C 00 00 17 25 00 00 17 11 00 00 17 00 00 00 -- 0B6C20
17 8A 00 00 17 72 00 00 17 62 00 00 17 4D 00 00 -- 0B6C30
17 E1 00 00 17 C3 00 00 17 B3 00 00 17 9E 00 00 -- 0B6C40
18 35 00 00 18 21 00 00 18 0F 00 00 17 FD 00 00 -- 0B6C50
18 7E 00 00 18 6B 00 00 18 5D 00 00 18 49 00 00 -- 0B6C60
18 CB 00 00 18 B7 00 00 18 A3 00 00 18 91 00 00 -- 0B6C70
19 21 00 00 19 0D 00 00 18 F7 00 00 18 E2 00 00 -- 0B6C80
19 7D 00 00 19 65 00 00 19 52 00 00 19 3C 00 00 -- 0B6C90
19 CE 00 00 19 B8 00 00 19 A6 00 00 19 91 00 00 -- 0B6CA0
1A 21 00 00 1A 12 00 00 19 FF 00 00 19 E8 00 00 -- 0B6CB0
1A 76 00 00 1A 5F 00 00 1A 4B 00 00 1A 35 00 00 -- 0B6CC0
1A CA 00 00 1A B6 00 00 1A A0 00 00 1A 8D 00 00 -- 0B6CD0
1B 1C 00 00 1B 02 00 00 1A F0 00 00 1A DC 00 00 -- 0B6CE0
1B 62 00 00 1B 51 00 00 1B 3F 00 00 1B 2B 00 00 -- 0B6CF0
1B BC 00 00 1B A1 00 00 1B 87 00 00 1B 71 00 00 -- 0B6D00
1C 0E 00 00 1B F5 00 00 1B E4 00 00 1B D2 00 00 -- 0B6D10
1C 63 00 00 1C 4A 00 00 1C 3A 00 00 1C 27 00 00 -- 0B6D20
1C B5 00 00 1C 9F 00 00 1C 87 00 00 1C 76 00 00 -- 0B6D30
1D 0E 00 00 1C F8 00 00 1C E4 00 00 1C CB 00 00 -- 0B6D40
1D 61 00 00 1D 4E 00 00 1D 34 00 00 1D 25 00 00 -- 0B6D50

1D A5 00 00 1D 97 00 00 1D 87 00 00 1D 78 00 00 -- 0B6D60
1D F7 00 00 1D E4 00 00 1D D8 00 00 1D C2 00 00 -- 0B6D70
1E 48 00 00 1E 37 00 00 1E 1B 00 00 1E 07 00 00 -- 0B6D80
1E 89 00 00 1E 7B 00 00 1E 6D 00 00 1E 5E 00 00 -- 0B6D90
1E E0 00 00 1E C7 00 00 1E B3 00 00 1E A2 00 00 -- 0B6DA0
1F 2A 00 00 1F 16 00 00 1F 04 00 00 1E ED 00 00 -- 0B6DB0
1F 7E 00 00 1F 65 00 00 1F 4B 00 00 1F 3B 00 00 -- 0B6DC0
1F C7 00 00 1F B5 00 00 1F A5 00 00 1F 94 00 00 -- 0B6DD0
20 17 00 00 20 01 00 00 1F ED 00 00 1F DD 00 00 -- 0B6DE0
20 70 00 00 20 57 00 00 20 3E 00 00 20 2E 00 00 -- 0B6DF0
00 00 20 B1 00 00 20 9A 00 00 20 86 00 00 01 FE -- 0B6E00
00 00 21 11 00 00 20 FC 00 00 20 E2 00 00 20 C9 -- 0B6E10
00 00 21 64 00 00 21 51 00 00 21 3A 00 00 21 26 -- 0B6E20
00 00 21 BA 00 00 21 A5 00 00 21 92 00 00 21 79 -- 0B6E30
00 00 22 0A 00 00 21 F7 00 00 21 E5 00 00 21 D0 -- 0B6E40
00 00 22 6C 00 00 22 52 00 00 22 39 00 00 22 1E -- 0B6E50
00 00 22 D3 00 00 22 BC 00 00 22 A2 00 00 22 87 -- 0B6E60
00 00 23 1F 00 00 23 08 00 00 22 F4 00 00 22 E6 -- 0B6E70
00 00 23 75 00 00 23 62 00 00 23 4F 00 00 23 3C -- 0B6E80
00 00 23 B6 00 00 23 A3 00 00 23 95 00 00 23 83 -- 0B6E90
00 00 24 07 00 00 23 F0 00 00 23 D8 00 00 23 C6 -- 0B6EA0
00 00 24 62 00 00 24 49 00 00 24 32 00 00 24 1F -- 0B6EB0
00 00 24 B7 00 00 24 A1 00 00 24 8F 00 00 24 7E -- 0B6EC0
00 00 25 17 00 00 24 FC 00 00 24 E1 00 00 24 CE -- 0B6ED0
00 00 25 76 00 00 25 5D 00 00 25 45 00 00 25 2C -- 0B6EE0
00 00 25 D2 00 00 25 BC 00 00 25 A1 00 00 25 88 -- 0B6EF0
00 00 26 23 00 00 26 0C 00 00 25 FB 00 00 25 E6 -- 0B6F00
```

```
00 00 26 82 00 00 26 6F 00 00 26 55 00 00 26 3F -- 0B6F10
00 00 26 E1 00 00 26 C4 00 00 26 AF 00 00 26 9D -- 0B6F20
00 00 27 45 00 00 27 2D 00 00 27 17 00 00 27 01 -- 0B6F30
00 00 27 84 00 00 27 6F 00 00 27 5D 00 00 27 4E -- 0B6F40
00 00 27 EB 00 00 27 CD 00 00 27 B5 00 00 27 9E -- 0B6F50
00 00 28 60 00 00 28 41 00 00 28 27 00 00 28 00 -- 0B6F60
00 00 28 BD 00 00 28 AB 00 00 28 90 00 00 28 78 -- 0B6F70
00 00 29 12 00 00 28 F9 00 00 28 E3 00 00 28 CD -- 0B6F80
00 00 29 78 00 00 29 5E 00 00 29 42 00 00 29 25 -- 0B6F90
00 00 29 C5 00 00 29 AD 00 00 29 98 00 00 29 8C -- 0B6FA0
00 00 2A 17 00 00 2A 05 00 00 29 EF 00 00 29 DE -- 0B6FB0
00 00 2A 70 00 00 2A 50 00 00 2A 44 00 00 2A 2F -- 0B6FC0
00 00 2A C5 00 00 2A AD 00 00 2A 95 00 00 2A 84 -- 0B6FD0
00 00 2B 18 00 00 2B 08 00 00 2A F6 00 00 2A DD -- 0B6FE0
00 00 2B 6E 00 00 2B 59 00 00 2B 41 00 00 2B 28 -- 0B6FF0
2B B9 00 00 2B A3 00 00 2B 93 00 00 2B 7D 01 FE -- 0B7000
2C 0D 00 00 2B F5 00 00 2B DF 00 00 2B CB 00 00 -- 0B7010
2C 5B 00 00 2C 45 00 00 2C 32 00 00 2C 21 00 00 -- 0B7020
2C A5 00 00 2C 94 00 00 2C 81 00 00 2C 70 00 00 -- 0B7030
2C EF 00 00 2C DE 00 00 2C CC 00 00 2C B7 00 00 -- 0B7040
2D 3C 00 00 2D 29 00 00 2D 17 00 00 2D 03 00 00 -- 0B7050
2D 90 00 00 2D 7A 00 00 2D 68 00 00 2D 54 00 00 -- 0B7060
2D DF 00 00 2D CD 00 00 2D BA 00 00 2D A6 00 00 -- 0B7070
2E 2A 00 00 2E 17 00 00 2E 02 00 00 2D ED 00 00 -- 0B7080
2E 6F 00 00 2E 5F 00 00 2E 51 00 00 2E 3D 00 00 -- 0B7090
2E B8 00 00 2E A7 00 00 2E 97 00 00 2E 85 00 00 -- 0B70A0
2E FA 00 00 2E ED 00 00 2E DD 00 00 2E CA 00 00 -- 0B70B0
2F 40 00 00 2F 2F 00 00 2F 1E 00 00 2F 0B 00 00 -- 0B70C0
2F 93 00 00 2F 7F 00 00 2F 6C 00 00 2F 55 00 00 -- 0B70D0
2F D6 00 00 2F C7 00 00 2F B7 00 00 2F A5 00 00 -- 0B70E0
30 14 00 00 30 02 00 00 2F F3 00 00 2F E4 00 00 -- 0B70F0

30 59 00 00 30 48 00 00 30 3C 00 00 30 29 00 00 -- 0B7100
30 AA 00 00 30 98 00 00 30 84 00 00 30 6D 00 00 -- 0B7110
30 F6 00 00 30 E6 00 00 30 D5 00 00 30 C1 00 00 -- 0B7120
31 58 00 00 31 46 00 00 31 32 00 00 31 14 00 00 -- 0B7130
31 AE 00 00 31 99 00 00 31 7E 00 00 31 6B 00 00 -- 0B7140
31 FF 00 00 31 EB 00 00 31 D9 00 00 31 C4 00 00 -- 0B7150
32 4C 00 00 32 36 00 00 32 23 00 00 32 11 00 00 -- 0B7160
32 94 00 00 32 88 00 00 32 70 00 00 32 64 00 00 -- 0B7170
32 D0 00 00 32 C4 00 00 32 B1 00 00 32 A0 00 00 -- 0B7180
33 0F 00 00 32 FE 00 00 32 ED 00 00 32 E1 00 00 -- 0B7190
33 58 00 00 33 48 00 00 33 32 00 00 33 21 00 00 -- 0B71A0
33 94 00 00 33 89 00 00 33 78 00 00 33 68 00 00 -- 0B71B0
33 D2 00 00 33 C2 00 00 33 B4 00 00 33 A4 00 00 -- 0B71C0
34 1D 00 00 34 0D 00 00 33 FD 00 00 33 E2 00 00 -- 0B71D0
34 60 00 00 34 50 00 00 34 3E 00 00 34 2D 00 00 -- 0B71E0
34 A0 00 00 34 90 00 00 34 84 00 00 34 74 00 00 -- 0B71F0
00 00 34 DA 00 00 34 C9 00 00 34 B5 00 00 01 FE -- 0B7200
00 00 35 14 00 00 35 04 00 00 34 F7 00 00 34 EA -- 0B7210
00 00 35 49 00 00 35 3F 00 00 35 2E 00 00 35 21 -- 0B7220
00 00 35 8C 00 00 35 75 00 00 35 64 00 00 35 5A -- 0B7230
00 00 35 D1 00 00 35 BB 00 00 35 AA 00 00 35 99 -- 0B7240
00 00 36 1B 00 00 36 08 00 00 35 F5 00 00 35 DE -- 0B7250
00 00 36 60 00 00 36 53 00 00 36 3D 00 00 36 2D -- 0B7260
00 00 36 99 00 00 36 89 00 00 36 7C 00 00 36 6D -- 0B7270
00 00 36 DA 00 00 36 C9 00 00 36 B8 00 00 36 A5 -- 0B7280
00 00 37 1E 00 00 37 0D 00 00 36 FC 00 00 36 EB -- 0B7290
00 00 37 63 00 00 37 52 00 00 37 41 00 00 37 30 -- 0B72A0
00 00 37 A2 00 00 37 91 00 00 37 85 00 00 37 74 -- 0B72B0
```

```
00 00 37 E2   00 00 37 D1   00 00 37 C5   00 00 37 B3   --   0B72C0
00 00 38 21   00 00 38 15   00 00 38 04   00 00 37 F3   --   0B72D0
00 00 38 68   00 00 38 5C   00 00 38 46   00 00 38 35   --   0B72E0
00 00 38 B7   00 00 38 A0   00 00 38 8E   00 00 38 79   --   0B72F0
00 00 39 04   00 00 38 F0   00 00 38 DE   00 00 38 C9   --   0B7300
00 00 39 5E   00 00 39 41   00 00 39 2B   00 00 39 16   --   0B7310
00 00 39 98   00 00 39 8A   00 00 39 7E   00 00 39 6F   --   0B7320
00 00 39 D8   00 00 39 C8   00 00 39 B8   00 00 39 A8   --   0B7330
00 00 3A 16   00 00 3A 06   00 00 39 F6   00 00 39 E8   --   0B7340
00 00 3A 59   00 00 3A 47   00 00 3A 37   00 00 3A 26   --   0B7350
00 00 3A A9   00 00 3A 92   00 00 3A 80   00 00 3A 6C   --   0B7360
00 00 3B 01   00 00 3A EF   00 00 3A DD   00 00 3A C0   --   0B7370
00 00 3B 5C   00 00 3B 44   00 00 3B 2E   00 00 3B 18   --   0B7380
00 00 3B AB   00 00 3B 97   00 00 3B 81   00 00 3B 6F   --   0B7390
00 00 3B F9   00 00 3B E8   00 00 3B D7   00 00 3B C1   --   0B73A0
00 00 3C 48   00 00 3C 35   00 00 3C 1F   00 00 3C 0E   --   0B73B0
00 00 3C 8E   00 00 3C 7D   00 00 3C 6B   00 00 3C 5A   --   0B73C0
00 00 3C D9   00 00 3C C8   00 00 3C B6   00 00 3C A5   --   0B73D0
00 00 3D 31   00 00 3D 18   00 00 3C FF   00 00 3C ED   --   0B73E0
00 00 3D 92   00 00 3D 79   00 00 3D 5F   00 00 3D 45   --   0B73F0
3D E3 00 00   3D CC 00 00   3D B9 00 00   3D A6 01 FE   --   0B7400
3E 2C 00 00   3E 16 00 00   3E 09 00 00   3D F7 00 00   --   0B7410
3E 7E 00 00   3E 68 00 00   3E 53 00 00   3E 41 00 00   --   0B7420
3E D5 00 00   3E BF 00 00   3E A9 00 00   3E 93 00 00   --   0B7430
3F 22 00 00   3F 0C 00 00   3E FE 00 00   3E E6 00 00   --   0B7440
3F 74 00 00   3F 64 00 00   3F 4C 00 00   3F 35 00 00   --   0B7450
3F B9 00 00   3F AA 00 00   3F 9B 00 00   3F 85 00 00   --   0B7460
40 0E 00 00   3F FB 00 00   3F E3 00 00   3F CE 00 00   --   0B7470
40 59 00 00   40 47 00 00   40 34 00 00   40 21 00 00   --   0B7480
40 AE 00 00   40 99 00 00   40 82 00 00   40 68 00 00   --   0B7490

41 0E 00 00   40 F5 00 00   40 DC 00 00   40 C5 00 00   --   0B74A0
41 66 00 00   41 55 00 00   41 3D 00 00   41 26 00 00   --   0B74B0
41 C4 00 00   41 AE 00 00   41 96 00 00   41 7F 00 00   --   0B74C0
42 22 00 00   42 0A 00 00   41 F4 00 00   41 DE 00 00   --   0B74D0
42 7C 00 00   42 67 00 00   42 52 00 00   42 3B 00 00   --   0B74E0
42 DA 00 00   42 C7 00 00   42 AD 00 00   42 98 00 00   --   0B74F0
43 1F 00 00   43 12 00 00   43 01 00 00   42 EC 00 00   --   0B7500
43 7E 00 00   43 62 00 00   43 4D 00 00   43 35 00 00   --   0B7510
43 C8 00 00   43 B5 00 00   43 A1 00 00   43 8E 00 00   --   0B7520
44 0F 00 00   44 00 00 00   43 EC 00 00   43 D9 00 00   --   0B7530
44 51 00 00   44 42 00 00   44 2E 00 00   44 1D 00 00   --   0B7540
44 AF 00 00   44 94 00 00   44 7D 00 00   44 6A 00 00   --   0B7550
44 FB 00 00   44 E2 00 00   44 CF 00 00   44 BD 00 00   --   0B7560
45 3A 00 00   45 2B 00 00   45 1A 00 00   45 0B 00 00   --   0B7570
45 85 00 00   45 71 00 00   45 63 00 00   45 4B 00 00   --   0B7580
45 D0 00 00   45 BD 00 00   45 AB 00 00   45 99 00 00   --   0B7590
46 1B 00 00   46 0A 00 00   45 F8 00 00   45 E3 00 00   --   0B75A0
46 6B 00 00   46 54 00 00   46 41 00 00   46 2D 00 00   --   0B75B0
46 C3 00 00   46 B4 00 00   46 9D 00 00   46 86 00 00   --   0B75C0
47 0C 00 00   46 FA 00 00   46 EB 00 00   46 D3 00 00   --   0B75D0
47 4C 00 00   47 3F 00 00   47 2D 00 00   47 19 00 00   --   0B75E0
47 90 00 00   47 7C 00 00   47 6C 00 00   47 5F 00 00   --   0B75F0
00 00 47 CF   00 00 47 C1   00 00 47 AD   00 00 01 FE   --   0B7600
00 00 48 1A   00 00 48 08   00 00 47 F8   00 00 47 E3   --   0B7610
00 00 48 67   00 00 48 55   00 00 48 43   00 00 48 31   --   0B7620
00 00 48 B3   00 00 48 A4   00 00 48 92   00 00 48 7C   --   0B7630
00 00 48 FA   00 00 48 E9   00 00 48 D7   00 00 48 C7   --   0B7640
00 00 49 49   00 00 49 38   00 00 49 24   00 00 49 0F   --   0B7650
00 00 49 8D   00 00 49 7F   00 00 49 6C   00 00 49 5E   --   0B7660
```

```
00  00  49  E0  00  00  49  CE  00  00  49  C0  00  00  49  A8  --  0B7670
00  C0  4A  31  00  00  4A  1C  00  00  4A  0C  00  00  49  F4  --  0B7680
00  00  4A  77  00  00  4A  65  00  00  4A  57  00  00  4A  49  --  0B7690
00  00  4A  B8  00  00  4A  A6  00  00  4A  96  00  00  4A  84  --  0B76A0
00  00  4B  04  00  00  4A  F0  00  00  4A  DB  00  00  4A  C9  --  0B76B0
00  00  4B  52  00  00  4B  3B  00  00  4B  24  00  00  4B  13  --  0B76C0
00  00  4B  9A  00  00  4B  86  00  00  4B  75  00  00  4B  66  --  0B76D0
00  00  4B  E7  00  00  4B  D2  00  00  4B  C2  00  00  4B  AE  --  0B76E0
00  00  4C  3B  00  00  4C  26  00  00  4C  11  00  00  4B  FC  --  0B76F0
00  00  4C  8F  00  00  4C  7A  00  00  4C  65  00  00  4C  50  --  0B7700
00  00  4C  EB  00  00  4C  D6  00  00  4C  C1  00  00  4C  AC  --  0B7710
00  00  4D  3F  00  00  4D  2A  00  00  4D  15  00  00  4D  00  --  0B7720
00  00  4D  93  00  00  4D  7E  00  00  4D  69  00  00  4D  54  --  0B7730
00  00  4D  D1  00  00  4D  C4  00  00  4D  B5  00  00  4D  A8  --  0B7740
00  00  4E  24  00  00  4E  0F  00  00  4D  FA  00  00  4D  E6  --  0B7750
00  00  4E  76  00  00  4E  62  00  00  4E  4D  00  00  4E  38  --  0B7760
00  00  4E  C7  00  00  4E  B3  00  00  4E  9F  00  00  4E  8A  --  0B7770
00  00  4F  19  00  00  4F  03  00  00  4E  EF  00  00  4E  DB  --  0B7780
00  00  4F  69  00  00  4F  55  00  00  4F  40  00  00  4F  2C  --  0B7790
00  00  4F  BA  00  00  4F  A6  00  00  4F  92  00  00  4F  7E  --  0B77A0
00  00  50  0B  00  00  4F  F7  00  00  4F  E3  00  00  4F  CF  --  0B77B0
00  00  50  58  00  00  50  44  00  00  50  30  00  00  50  1C  --  0B77C0
00  00  50  AE  00  00  50  9A  00  00  50  86  00  00  50  6C  --  0B77D0
00  00  50  FA  00  00  50  E6  00  00  50  D2  00  00  50  C2  --  0B77E0
00  00  51  49  00  00  51  3A  00  00  51  27  00  00  51  0E  --  0B77F0
51  9D  00  00  51  85  00  00  51  76  00  00  51  64  01  FE  --  0B7800
51  EC  00  00  51  D5  00  00  51  BE  00  00  51  AE  00  00  --  0B7810
52  44  00  00  52  2E  00  00  52  1C  00  00  52  04  00  00  --  0B7820
52  92  00  00  52  7D  00  00  52  69  00  00  52  57  00  00  --  0B7830

52  E4  00  00  52  CE  00  00  52  B9  00  00  52  A4  00  00  --  0B7840
53  36  00  00  53  28  00  00  53  10  00  00  52  FB  00  00  --  0B7850
53  77  00  00  53  61  00  00  53  52  00  00  53  44  00  00  --  0B7860
53  CA  00  00  53  B8  00  00  53  A0  00  00  53  88  00  00  --  0B7870
54  0B  00  00  53  FD  00  00  53  E3  00  00  53  D8  00  00  --  0B7880
54  4F  00  00  54  42  00  00  54  34  00  00  54  1E  00  00  --  0B7890
54  A5  00  00  54  98  00  00  54  79  00  00  54  60  00  00  --  0B78A0
54  F5  00  00  54  E1  00  00  54  CD  00  00  54  BB  00  00  --  0B78B0
55  3A  00  00  55  2B  00  00  55  18  00  00  55  02  00  00  --  0B78C0
55  84  00  00  55  6F  00  00  55  62  00  00  55  4E  00  00  --  0B78D0
55  C9  00  00  55  B6  00  00  55  A4  00  00  55  94  00  00  --  0B78E0
56  14  00  00  56  05  00  00  55  EE  00  00  55  DD  00  00  --  0B78F0
56  54  00  00  56  45  00  00  56  33  00  00  56  23  00  00  --  0B7900
56  99  00  00  56  85  00  00  56  73  00  00  56  63  00  00  --  0B7910
56  E6  00  00  56  D1  00  00  56  BB  00  00  56  AD  00  00  --  0B7920
57  35  00  00  57  23  00  00  57  0E  00  00  56  F8  00  00  --  0B7930
57  8B  00  00  57  77  00  00  57  63  00  00  57  4C  00  00  --  0B7940
57  E0  00  00  57  CC  00  00  57  B6  00  00  57  A2  00  00  --  0B7950
58  3B  00  00  58  27  00  00  58  0D  00  00  57  F7  00  00  --  0B7960
58  81  00  00  58  6F  00  00  58  57  00  00  58  49  00  00  --  0B7970
58  D0  00  00  58  BD  00  00  58  A8  00  00  58  94  00  00  --  0B7980
59  36  00  00  59  1A  00  00  59  00  00  00  58  E6  00  00  --  0B7990
59  7B  00  00  59  6A  00  00  59  58  00  00  59  44  00  00  --  0B79A0
59  C9  00  00  59  B3  00  00  59  A2  00  00  59  8E  00  00  --  0B79B0
5A  27  00  00  5A  11  00  00  59  FB  00  00  59  E7  00  00  --  0B79C0
5A  6E  00  00  5A  5B  00  00  5A  4D  00  00  5A  3B  00  00  --  0B79D0
5A  C4  00  00  5A  AA  00  00  5A  99  00  00  5A  82  00  00  --  0B79E0
5B  12  00  00  5B  02  00  00  5A  EC  00  00  5A  DB  00  00  --  0B79F0
00  00  5B  53  00  00  5B  41  00  00  5B  2B  00  00  01  FE  --  0B7A00
00  00  5B  A9  00  00  5B  92  00  00  5B  7B  00  00  5B  65  --  0B7A10
```

```
00 00 5B F3 00 00 5B E0 00 00 5B CB 00 00 5B BB -- 0B7A20
00 00 5C 49 00 00 5C 33 00 00 5C 25 00 00 5C 0E -- 0B7A30
00 00 5C AA 00 00 5C 93 00 00 5C 7C 00 00 5C 66 -- 0B7A40
00 00 5D 03 00 00 5C F0 00 00 5C DB 00 00 5C BF -- 0B7A50
00 00 5D 5D 00 00 5D 49 00 00 5D 33 00 00 5D 1C -- 0B7A60
00 00 5D AF 00 00 5D 99 00 00 5D 83 00 00 5D 6D -- 0B7A70
00 00 5E 07 00 00 5D F1 00 00 5D DB 00 00 5D C5 -- 0B7A80
00 00 5E 58 00 00 5E 3F 00 00 5E 2F 00 00 5E 19 -- 0B7A90
00 00 5E B1 00 00 5E 9A 00 00 5E 82 00 00 5E 6D -- 0B7AA0
00 00 5F 02 00 00 5E EC 00 00 5E D7 00 00 5E C4 -- 0B7AB0
00 00 5F 57 00 00 5F 3F 00 00 5F 2C 00 00 5F 13 -- 0B7AC0
00 00 5F AE 00 00 5F 94 00 00 5F 84 00 00 5F 70 -- 0B7AD0
00 00 60 07 00 00 5F F3 00 00 5F DC 00 00 5F C7 -- 0B7AE0
00 00 60 51 00 00 60 3D 00 00 60 2B 00 00 60 1A -- 0B7AF0
00 00 60 BC 00 00 60 A4 00 00 60 8B 00 00 60 6E -- 0B7B00
00 00 61 13 00 00 61 00 00 00 60 EA 00 00 60 D2 -- 0B7B10
00 00 61 5C 00 00 61 4C 00 00 61 3B 00 00 61 2A -- 0B7B20
00 00 61 A8 00 00 61 98 00 00 61 83 00 00 61 72 -- 0B7B30
00 00 61 FA 00 00 61 E6 00 00 61 D4 00 00 61 BD -- 0B7B40
00 00 62 4B 00 00 62 3A 00 00 62 2B 00 00 62 18 -- 0B7B50
00 00 62 AE 00 00 62 9D 00 00 62 72 00 00 62 5C -- 0B7B60
00 00 63 04 00 00 62 E6 00 00 62 D4 00 00 62 BF -- 0B7B70
00 00 63 45 00 00 63 38 00 00 63 22 00 00 63 12 -- 0B7B80
00 00 63 9F 00 00 63 89 00 00 63 69 00 00 63 56 -- 0B7B90
00 00 63 F7 00 00 63 EB 00 00 63 D2 00 00 63 C3 -- 0B7BA0
00 00 64 3E 00 00 64 30 00 00 64 16 00 00 64 08 -- 0B7BB0
00 00 64 A5 00 00 64 83 00 00 64 72 00 00 64 5C -- 0B7BC0
00 00 64 F5 00 00 64 E7 00 00 64 D4 00 00 64 BD -- 0B7BD0

00 00 65 3E 00 00 65 26 00 00 65 15 00 00 65 06 -- 0B7BE0
00 00 65 96 00 00 65 80 00 00 65 67 00 00 65 50 -- 0B7BF0
65 F1 00 00 65 D7 00 00 65 C1 00 00 65 A9 01 FE -- 0B7C00
66 47 00 00 66 34 00 00 66 1D 00 00 66 09 00 00 -- 0B7C10
66 9C 00 00 66 8D 00 00 66 73 00 00 66 5D 00 00 -- 0B7C20
66 F7 00 00 66 E3 00 00 66 CB 00 00 66 B0 00 00 -- 0B7C30
67 55 00 00 67 3C 00 00 67 23 00 00 67 0C 00 00 -- 0B7C40
67 9B 00 00 67 8B 00 00 67 79 00 00 67 67 00 00 -- 0B7C50
67 EA 00 00 67 D9 00 00 67 C6 00 00 67 AE 00 00 -- 0B7C60
68 41 00 00 68 31 00 00 68 16 00 00 67 FC 00 00 -- 0B7C70
68 91 00 00 68 83 00 00 68 69 00 00 68 56 00 00 -- 0B7C80
68 E0 00 00 68 D1 00 00 68 BA 00 00 68 A9 00 00 -- 0B7C90
69 39 00 00 69 26 00 00 69 10 00 00 68 F4 00 00 -- 0B7CA0
69 8F 00 00 69 7C 00 00 69 63 00 00 69 49 00 00 -- 0B7CB0
69 DE 00 00 69 CA 00 00 69 B8 00 00 69 A6 00 00 -- 0B7CC0
6A 32 00 00 6A 1F 00 00 6A 0D 00 00 69 F5 00 00 -- 0B7CD0
6A 95 00 00 6A 7E 00 00 6A 68 00 00 6A 4A 00 00 -- 0B7CE0
6A EB 00 00 6A D4 00 00 6A BD 00 00 6A AB 00 00 -- 0B7CF0
6B 43 00 00 6B 2B 00 00 6B 16 00 00 6B 01 00 00 -- 0B7D00
6B 97 00 00 6B 81 00 00 6B 6D 00 00 6B 59 00 00 -- 0B7D10
6B F0 00 00 6B D5 00 00 6B BC 00 00 6B AA 00 00 -- 0B7D20
6C 4E 00 00 6C 3A 00 00 6C 22 00 00 6C 09 00 00 -- 0B7D30
6C A1 00 00 6C 8D 00 00 6C 7B 00 00 6C 63 00 00 -- 0B7D40
6C F3 00 00 6C DD 00 00 6C C5 00 00 6C B2 00 00 -- 0B7D50
6D 53 00 00 6D 38 00 00 6D 1C 00 00 6D 05 00 00 -- 0B7D60
6D A1 00 00 6D 88 00 00 6D 7D 00 00 6D 65 00 00 -- 0B7D70
6D E8 00 00 6D D9 00 00 6D C8 00 00 6D B3 00 00 -- 0B7D80
6E 34 00 00 6E 1F 00 00 6E 09 00 00 6D F4 00 00 -- 0B7D90
6E 8A 00 00 6E 74 00 00 6E 62 00 00 6E 4C 00 00 -- 0B7DA0
6E D3 00 00 6E C2 00 00 6E AD 00 00 6E 9F 00 00 -- 0B7DB0
6F 1D 00 00 6F 07 00 00 6E F6 00 00 6E E2 00 00 -- 0B7DC0
```

```
6F 77 00 00 6F 63 00 00 6F 4D 00 00 6F 34 00 00 -- 0B7DD0
6F D0 00 00 6F BB 00 00 6F A5 00 00 6F 91 00 00 -- 0B7DE0
70 2A 00 00 70 12 00 00 6F FC 00 00 6F E6 00 00 -- 0B7DF0
00 00 70 76 00 00 70 56 00 00 70 41 00 00 01 FE -- 0B7E00
00 00 70 D9 00 00 70 C2 00 00 70 A7 00 00 70 8A -- 0B7E10
00 00 71 38 00 00 71 22 00 00 71 08 00 00 70 F0 -- 0B7E20
00 00 71 94 00 00 71 7C 00 00 71 64 00 00 71 4E -- 0B7E30
00 00 71 EE 00 00 71 D6 00 00 71 C0 00 00 71 AE -- 0B7E40
00 00 72 48 00 00 72 37 00 00 72 21 00 00 72 0A -- 0B7E50
00 00 72 A0 00 00 72 8E 00 00 72 7B 00 00 72 64 -- 0B7E60
00 00 72 FC 00 00 72 E9 00 00 72 D1 00 00 72 BC -- 0B7E70
00 00 73 49 00 00 73 37 00 00 73 24 00 00 73 0C -- 0B7E80
00 00 73 9B 00 00 73 86 00 00 73 78 00 00 73 62 -- 0B7E90
00 00 73 E2 00 00 73 D2 00 00 73 C0 00 00 73 AD -- 0B7EA0
00 00 74 33 00 00 74 24 00 00 74 09 00 00 73 F7 -- 0B7EB0
00 00 74 8D 00 00 74 78 00 00 74 5B 00 00 74 4A -- 0B7EC0
00 00 74 DC 00 00 74 C9 00 00 74 AF 00 00 74 9D -- 0B7ED0
00 00 75 2F 00 00 75 18 00 00 75 06 00 00 74 F5 -- 0B7EE0
00 00 75 8E 00 00 75 75 00 00 75 55 00 00 75 45 -- 0B7EF0
00 00 75 DC 00 00 75 C9 00 00 75 B6 00 00 75 A2 -- 0B7F00
00 00 76 22 00 00 76 08 00 00 75 FA 00 00 75 E8 -- 0B7F10
00 00 76 6E 00 00 76 59 00 00 76 3F 00 00 76 32 -- 0B7F20
00 00 76 AD 00 00 76 A0 00 00 76 93 00 00 76 7E -- 0B7F30
00 00 77 0E 00 00 76 FA 00 00 76 D9 00 00 76 BF -- 0B7F40
00 00 77 72 00 00 77 5B 00 00 77 46 00 00 77 2A -- 0B7F50
00 00 77 C7 00 00 77 B2 00 00 77 A0 00 00 77 8B -- 0B7F60
00 00 78 1D 00 00 78 09 00 00 77 F0 00 00 77 D9 -- 0B7F70

00 00 78 7E 00 00 78 66 00 00 78 4D 00 00 78 38 -- 0B7F80
00 00 78 CD 00 00 78 B5 00 00 78 A2 00 00 78 8E -- 0B7F90
00 00 79 29 00 00 79 16 00 00 79 00 00 00 78 E3 -- 0B7FA0
00 00 79 87 00 00 79 70 00 00 79 55 00 00 79 3D -- 0B7FB0
00 00 79 D7 00 00 79 BD 00 00 79 AB 00 00 79 96 -- 0B7FC0
00 00 7A 29 00 00 7A 1A 00 00 7A 01 00 00 79 EA -- 0B7FD0
00 00 7A 71 00 00 7A 5F 00 00 7A 4A 00 00 7A 39 -- 0B7FE0
00 00 7A BD 00 00 7A AB 00 00 7A 98 00 00 7A 88 -- 0B7FF0
7B 0D 00 00 7A FB 00 00 7A E8 00 00 7A D1 01 FE -- 0B8000
7B 59 00 00 7B 49 00 00 7B 37 00 00 7B 1E 00 00 -- 0B8010
7B AF 00 00 7B 9C 00 00 7B 88 00 00 7B 74 00 00 -- 0B8020
7C 07 00 00 7B F3 00 00 7B DD 00 00 7B C9 00 00 -- 0B8030
7C 53 00 00 7C 3E 00 00 7C 2B 00 00 7C 16 00 00 -- 0B8040
7C 9E 00 00 7C 8C 00 00 7C 78 00 00 7C 66 00 00 -- 0B8050
7C E6 00 00 7C D1 00 00 7C C1 00 00 7C AB 00 00 -- 0B8060
7D 34 00 00 7D 20 00 00 7D 0F 00 00 7C FF 00 00 -- 0B8070
7D 84 00 00 7D 6D 00 00 7D 59 00 00 7D 46 00 00 -- 0B8080
7D C9 00 00 7D B9 00 00 7D A8 00 00 7D 95 00 00 -- 0B8090
7E 0D 00 00 7E 01 00 00 7D F0 00 00 7D E0 00 00 -- 0B80A0
7E 52 00 00 7E 44 00 00 7E 36 00 00 7E 20 00 00 -- 0B80B0
7E AD 00 00 7E 9C 00 00 7E 84 00 00 7E 6A 00 00 -- 0B80C0
7E F8 00 00 7E E3 00 00 7E CF 00 00 7E BE 00 00 -- 0B80D0
7F 4A 00 00 7F 35 00 00 7F 28 00 00 7F 12 00 00 -- 0B80E0
7F 8E 00 00 7F 7D 00 00 7F 6D 00 00 7F 5A 00 00 -- 0B80F0
7F DF 00 00 7F C3 00 00 7F AF 00 00 7F 9F 00 00 -- 0B8100
80 29 00 00 80 1A 00 00 80 05 00 00 7F F3 00 00 -- 0B8110
80 73 00 00 80 67 00 00 80 53 00 00 80 44 00 00 -- 0B8120
80 BA 00 00 80 AB 00 00 80 94 00 00 80 85 00 00 -- 0B8130
81 05 00 00 80 EF 00 00 80 DE 00 00 80 CB 00 00 -- 0B8140
81 50 00 00 81 39 00 00 81 28 00 00 81 17 00 00 -- 0B8150
81 93 00 00 81 82 00 00 81 78 00 00 81 5F 00 00 -- 0B8160
81 D9 00 00 81 C9 00 00 81 B6 00 00 81 A3 00 00 -- 0B8170
```

```
82 21 00 00 82 0E 00 00 81 FC 00 00 81 F0 00 00 -- 0B8180
82 75 00 00 82 5F 00 00 82 4C 00 00 82 3A 00 00 -- 0B8190
82 C5 00 00 82 B1 00 00 82 9D 00 00 82 89 00 00 -- 0B81A0
83 16 00 00 83 02 00 00 82 EE 00 00 82 D9 00 00 -- 0B81B0
83 68 00 00 83 55 00 00 83 42 00 00 83 2F 00 00 -- 0B81C0
83 B9 00 00 83 A4 00 00 83 90 00 00 83 7B 00 00 -- 0B81D0
84 0B 00 00 83 F4 00 00 83 E2 00 00 83 C6 00 00 -- 0B81E0
84 56 00 00 84 43 00 00 84 2E 00 00 84 1D 00 00 -- 0B81F0
00 00 84 8B 00 00 84 7A 00 00 84 67 00 00 01 FE -- 0B8200
00 00 84 D7 00 00 84 C6 00 00 84 AF 00 00 84 9F -- 0B8210
00 00 85 1C 00 00 85 06 00 00 84 F8 00 00 84 EE -- 0B8220
00 00 85 64 00 00 85 52 00 00 85 3E 00 00 85 29 -- 0B8230
00 00 85 C9 00 00 85 B0 00 00 85 9A 00 00 85 80 -- 0B8240
00 00 86 2F 00 00 86 12 00 00 85 FB 00 00 85 E4 -- 0B8250
00 00 86 85 00 00 86 6F 00 00 86 61 00 00 86 4A -- 0B8260
00 00 86 CC 00 00 86 B8 00 00 86 AB 00 00 86 9B -- 0B8270
00 00 87 2A 00 00 87 11 00 00 86 F9 00 00 86 E1 -- 0B8280
00 00 87 85 00 00 87 70 00 00 87 5B 00 00 87 43 -- 0B8290
00 00 87 D7 00 00 87 C0 00 00 87 A9 00 00 87 98 -- 0B82A0
00 00 88 2D 00 00 88 15 00 00 87 F9 00 00 87 E6 -- 0B82B0
00 00 88 85 00 00 88 68 00 00 88 57 00 00 88 3F -- 0B82C0
00 00 88 D9 00 00 88 C8 00 00 88 B7 00 00 88 A3 -- 0B82D0
00 00 89 32 00 00 89 18 00 00 88 FE 00 00 88 EA -- 0B82E0
00 00 89 90 00 00 89 80 00 00 89 67 00 00 89 4D -- 0B82F0
00 00 89 D6 00 00 89 C5 00 00 89 B5 00 00 89 A0 -- 0B8300
00 00 8A 18 00 00 8A 05 00 00 89 F3 00 00 89 E5 -- 0B8310

00 00 8A 74 00 00 8A 5D 00 00 8A 46 00 00 8A 2F -- 0B8320
00 00 8A CE 00 00 8A B5 00 00 8A 9D 00 00 8A 8D -- 0B8330
00 00 8B 19 00 00 8B 0B 00 00 8A F7 00 00 8A E0 -- 0B8340
00 00 8B 66 00 00 8B 50 00 00 8B 41 00 00 8B 2E -- 0B8350
00 00 8B B4 00 00 8B 9C 00 00 8B 8D 00 00 8B 7C -- 0B8360
00 00 8B FA 00 00 8B E6 00 00 8B D5 00 00 8B C9 -- 0B8370
00 00 8C 38 00 00 8C 2B 00 00 8C 1E 00 00 8C 08 -- 0B8380
00 00 8C 6A 00 00 8C 5E 00 00 8C 51 00 00 8C 45 -- 0B8390
00 00 8C CF 00 00 8C AF 00 00 8C 91 00 00 8C 76 -- 0B83A0
00 00 8D 1C 00 00 8D 0F 00 00 8C FD 00 00 8C ED -- 0B83B0
00 00 8D 70 00 00 8D 5A 00 00 8D 43 00 00 8D 30 -- 0B83C0
00 00 8D C7 00 00 8D B4 00 00 8D 9B 00 00 8D 84 -- 0B83D0
00 00 8E 17 00 00 8E 06 00 00 8D F1 00 00 8D DB -- 0B83E0
00 00 8E 86 00 00 8E 68 00 00 8E 52 00 00 8E 35 -- 0B83F0
8E DE 00 00 8E D0 00 00 8E B3 00 00 8E 9D 01 FE -- 0B8400
8F 2E 00 00 8F 19 00 00 8F 04 00 00 8E F2 00 00 -- 0B8410
8F 7F 00 00 8F 64 00 00 8F 51 00 00 8F 43 00 00 -- 0B8420
8F CA 00 00 8F B8 00 00 8F A7 00 00 8F 92 00 00 -- 0B8430
90 17 00 00 90 02 00 00 8F F0 00 00 8F E0 00 00 -- 0B8440
90 5E 00 00 90 48 00 00 90 38 00 00 90 29 00 00 -- 0B8450
90 AA 00 00 90 94 00 00 90 85 00 00 90 6E 00 00 -- 0B8460
90 F4 00 00 90 E3 00 00 90 CC 00 00 90 BB 00 00 -- 0B8470
91 3C 00 00 91 29 00 00 91 18 00 00 91 09 00 00 -- 0B8480
91 83 00 00 91 6C 00 00 91 5E 00 00 91 4D 00 00 -- 0B8490
91 D6 00 00 91 C7 00 00 91 B2 00 00 91 9A 00 00 -- 0B84A0
92 21 00 00 92 12 00 00 91 F9 00 00 91 EB 00 00 -- 0B84B0
92 6A 00 00 92 58 00 00 92 46 00 00 92 31 00 00 -- 0B84C0
92 BB 00 00 92 A8 00 00 92 94 00 00 92 7A 00 00 -- 0B84D0
93 09 00 00 92 F2 00 00 92 E0 00 00 92 CE 00 00 -- 0B84E0
93 69 00 00 93 51 00 00 93 37 00 00 93 1E 00 00 -- 0B84F0
93 BD 00 00 93 AB 00 00 93 95 00 00 93 84 00 00 -- 0B8500
94 10 00 00 93 FC 00 00 93 E6 00 00 93 D0 00 00 -- 0B8510
94 62 00 00 94 4A 00 00 94 37 00 00 94 23 00 00 -- 0B8520
```

```
94 AD 00 00 94 96 00 00 94 86 00 00 94 74 00 00 -- 0B8530
94 F7 00 00 94 E0 00 00 94 CC 00 00 94 BC 00 00 -- 0B8540
95 54 00 00 95 3B 00 00 95 23 00 00 95 0C 00 00 -- 0B8550
95 A3 00 00 95 94 00 00 95 7C 00 00 95 64 00 00 -- 0B8560
96 00 00 00 95 E9 00 00 95 CD 00 00 95 B6 00 00 -- 0B8570
96 52 00 00 96 3D 00 00 96 2A 00 00 96 18 00 00 -- 0B8580
96 8E 00 00 96 7F 00 00 96 70 00 00 96 62 00 00 -- 0B8590
96 DF 00 00 96 CC 00 00 96 B9 00 00 96 A0 00 00 -- 0B85A0
97 28 00 00 97 17 00 00 97 04 00 00 96 F2 00 00 -- 0B85B0
97 7B 00 00 97 65 00 00 97 50 00 00 97 3A 00 00 -- 0B85C0
97 C4 00 00 97 AE 00 00 97 A0 00 00 97 91 00 00 -- 0B85D0
98 14 00 00 98 05 00 00 97 ED 00 00 97 D8 00 00 -- 0B85E0
98 68 00 00 98 50 00 00 98 3C 00 00 98 2B 00 00 -- 0B85F0
00 00 98 A5 00 00 98 8E 00 00 98 7A 00 00 01 FE -- 0B8600
00 00 98 FC 00 00 98 E5 00 00 98 CD 00 00 98 BB -- 0B8610
00 00 99 49 00 00 99 3A 00 00 99 20 00 00 99 0D -- 0B8620
00 00 99 A8 00 00 99 93 00 00 99 7D 00 00 99 69 -- 0B8630
00 00 99 FC 00 00 99 E2 00 00 99 D4 00 00 99 BC -- 0B8640
00 00 9A 48 00 00 9A 32 00 00 9A 1D 00 00 9A 0B -- 0B8650
00 00 9A 9B 00 00 9A 84 00 00 9A 71 00 00 9A 5A -- 0B8660
00 00 9A EC 00 00 9A D6 00 00 9A C0 00 00 9A AF -- 0B8670
00 00 9B 45 00 00 9B 31 00 00 9B 1D 00 00 9B 01 -- 0B8680
00 00 9B 9C 00 00 9B 86 00 00 9B 6E 00 00 9B 57 -- 0B8690
00 00 9B F9 00 00 9B E3 00 00 9B C7 00 00 9B B3 -- 0B86A0
00 00 9C 5A 00 00 9C 45 00 00 9C 2F 00 00 9C 12 -- 0B86B0

00 00 9C AF 00 00 9C 9D 00 00 9C 85 00 00 9C 71 -- 0B86C0
00 00 9C F9 00 00 9C E8 00 00 9C D4 00 00 9C C3 -- 0B86D0
00 00 9D 47 00 00 9D 32 00 00 9D 21 00 00 9D 0B -- 0B86E0
00 00 9D 96 00 00 9D 83 00 00 9D 70 00 00 9D 59 -- 0B86F0
00 00 9D D9 00 00 9D C9 00 00 9D B7 00 00 9D A2 -- 0B8700
00 00 9E 2C 00 00 9E 1C 00 00 9E 04 00 00 9D F2 -- 0B8710
00 00 9E 75 00 00 9E 5D 00 00 9E 4C 00 00 9E 3E -- 0B8720
00 00 9E CD 00 00 9E B2 00 00 9E 9B 00 00 9E 88 -- 0B8730
00 00 9F 1F 00 00 9F 0F 00 00 9E FD 00 00 9E E4 -- 0B8740
00 00 9F 6D 00 00 9F 5A 00 00 9F 47 00 00 9F 32 -- 0B8750
00 00 9F BF 00 00 9F AE 00 00 9F 9C 00 00 9F 84 -- 0B8760
00 00 A0 12 00 00 9F FE 00 00 9F E9 00 00 9F D6 -- 0B8770
00 00 A0 69 00 00 A0 50 00 00 A0 38 00 00 A0 25 -- 0B8780
00 00 A0 BD 00 00 A0 A4 00 00 A0 8B 00 00 A0 7A -- 0B8790
00 00 A1 12 00 00 A0 FF 00 00 A0 E8 00 00 A0 D1 -- 0B87A0
00 00 A1 66 00 00 A1 51 00 00 A1 3C 00 00 A1 25 -- 0B87B0
00 00 A1 C0 00 00 A1 A7 00 00 A1 93 00 00 A1 7F -- 0B87C0
00 00 A2 1B 00 00 A2 08 00 00 A1 EE 00 00 A1 D9 -- 0B87D0
00 00 A2 6F 00 00 A2 5C 00 00 A2 47 00 00 A2 30 -- 0B87E0
00 00 A2 C8 00 00 A2 B9 00 00 A2 9F 00 00 A2 87 -- 0B87F0
A3 03 00 00 A2 F5 00 00 A2 E7 00 00 A2 DB 01 FE -- 0B8800
A3 64 00 00 A3 4C 00 00 A3 37 00 00 A3 1B 00 00 -- 0B8810
A3 C4 00 00 A3 AE 00 00 A3 96 00 00 A3 7B 00 00 -- 0B8820
A4 1B 00 00 A4 09 00 00 A3 F5 00 00 A3 DD 00 00 -- 0B8830
A4 72 00 00 A4 64 00 00 A4 51 00 00 A4 33 00 00 -- 0B8840
A4 B1 00 00 A4 9F 00 00 A4 8F 00 00 A4 7F 00 00 -- 0B8850
A4 FF 00 00 A4 EF 00 00 A4 D4 00 00 A4 C6 00 00 -- 0B8860
A5 3F 00 00 A5 2D 00 00 A5 1E 00 00 A5 0E 00 00 -- 0B8870
A5 8B 00 00 A5 78 00 00 A5 63 00 00 A5 4D 00 00 -- 0B8880
A5 D9 00 00 A5 C3 00 00 A5 AD 00 00 A5 9C 00 00 -- 0B8890
A6 2B 00 00 A6 15 00 00 A6 03 00 00 A5 ED 00 00 -- 0B88A0
A6 79 00 00 A6 64 00 00 A6 53 00 00 A6 46 00 00 -- 0B88B0
A6 C7 00 00 A6 B4 00 00 A6 9B 00 00 A6 88 00 00 -- 0B88C0
A7 16 00 00 A6 FD 00 00 A6 EA 00 00 A6 D9 00 00 -- 0B88D0
```

```
A7 68 00 00 A7 53 00 00 A7 3D 00 00 A7 2A 00 00 -- 0B88E0
A7 A0 00 00 A7 92 00 00 A7 80 00 00 A7 74 00 00 -- 0B88F0
A7 F0 00 00 A7 DC 00 00 A7 C7 00 00 A7 B3 00 00 -- 0B8900
A8 49 00 00 A8 36 00 00 A8 1E 00 00 A8 07 00 00 -- 0B8910
A8 A0 00 00 A8 87 00 00 A8 70 00 00 A8 5C 00 00 -- 0B8920
A8 EA 00 00 A8 D6 00 00 A8 C3 00 00 A8 B0 00 00 -- 0B8930
A9 44 00 00 A9 2B 00 00 A9 19 00 00 A9 02 00 00 -- 0B8940
A9 89 00 00 A9 79 00 00 A9 69 00 00 A9 59 00 00 -- 0B8950
A9 CB 00 00 A9 B9 00 00 A9 A8 00 00 A9 97 00 00 -- 0B8960
AA 06 00 00 A9 F6 00 00 A9 E7 00 00 A9 D9 00 00 -- 0B8970
AA 4B 00 00 AA 3D 00 00 AA 2B 00 00 AA 1C 00 00 -- 0B8980
AA 8B 00 00 AA 7B 00 00 AA 6B 00 00 AA 59 00 00 -- 0B8990
AA CB 00 00 AA B8 00 00 AA AA 00 00 AA 9B 00 00 -- 0B89A0
AB 31 00 00 AB 1C 00 00 AB 00 00 00 AA E5 00 00 -- 0B89B0
AB 85 00 00 AB 71 00 00 AB 5C 00 00 AB 48 00 00 -- 0B89C0
AB E6 00 00 AB D0 00 00 AB B6 00 00 AB 9E 00 00 -- 0B89D0
AC 3F 00 00 AC 2D 00 00 AC 14 00 00 AB FA 00 00 -- 0B89E0
AC 7B 00 00 AC 6B 00 00 AC 5D 00 00 AC 50 00 00 -- 0B89F0
00 00 AC A6 00 00 AC 98 00 00 AC 8B 00 00 01 FE -- 0B8A00
00 00 AC E7 00 00 AC D9 00 00 AC CB 00 00 AC BE -- 0B8A10
00 00 AD 1B 00 00 AD 0D 00 00 AD 01 00 00 AC F4 -- 0B8A20
00 00 AD 5C 00 00 AD 4B 00 00 AD 39 00 00 AD 28 -- 0B8A30
00 00 AD 9B 00 00 AD 8A 00 00 AD 7A 00 00 AD 6B -- 0B8A40
00 00 AD CF 00 00 AD C2 00 00 AD B6 00 00 AD A8 -- 0B8A50

00 00 AE 03 00 00 AD F6 00 00 AD E9 00 00 AD DC -- 0B8A60
00 00 AE 36 00 00 AE 29 00 00 AE 1C 00 00 AE 0F -- 0B8A70
00 00 AE 6A 00 00 AE 5D 00 00 AE 50 00 00 AE 43 -- 0B8A80
00 00 AE 9E 00 00 AE 91 00 00 AE 84 00 00 AE 77 -- 0B8A90
00 00 AE D0 00 00 AE C4 00 00 AE B7 00 00 AE AB -- 0B8AA0
00 00 AF 07 00 00 AE F8 00 00 AE EB 00 00 AE DE -- 0B8AB0
00 00 AF 38 00 00 AF 2D 00 00 AF 20 00 00 AF 12 -- 0B8AC0
00 00 AF 68 00 00 AF 5B 00 00 AF 4F 00 00 AF 44 -- 0B8AD0
00 00 AF A1 00 00 AF 92 00 00 AF 83 00 00 AF 74 -- 0B8AE0
00 00 AF D8 00 00 AF CB 00 00 AF BE 00 00 AF AF -- 0B8AF0
00 00 B0 0C 00 00 AF FF 00 00 AF F2 00 00 AF E5 -- 0B8B00
00 00 B0 44 00 00 B0 36 00 00 B0 27 00 00 B0 1A -- 0B8B10
00 00 B0 79 00 00 B0 6B 00 00 B0 5F 00 00 B0 51 -- 0B8B20
00 00 B0 B1 00 00 B0 A4 00 00 B0 96 00 00 B0 88 -- 0B8B30
00 00 B0 E4 00 00 B0 D7 00 00 B0 CA 00 00 B0 BD -- 0B8B40
00 00 B1 19 00 00 B1 0B 00 00 B0 FE 00 00 B0 F3 -- 0B8B50
00 00 B1 4B 00 00 B1 3E 00 00 B1 32 00 00 B1 27 -- 0B8B60
00 00 B1 7C 00 00 B1 6F 00 00 B1 62 00 00 B1 56 -- 0B8B70
00 00 B1 B2 00 00 B1 A5 00 00 B1 96 00 00 B1 89 -- 0B8B80
00 00 B1 E5 00 00 B1 D9 00 00 B1 CD 00 00 B1 C0 -- 0B8B90
00 00 B2 18 00 00 B2 0B 00 00 B1 FD 00 00 B1 F1 -- 0B8BA0
00 00 B2 4C 00 00 B2 3F 00 00 B2 32 00 00 B2 25 -- 0B8BB0
00 00 B2 80 00 00 B2 73 00 00 B2 66 00 00 B2 59 -- 0B8BC0
00 00 B2 BE 00 00 B2 A9 00 00 B2 9B 00 00 B2 8E -- 0B8BD0
00 00 B2 FD 00 00 B2 EE 00 00 B2 E0 00 00 B2 CE -- 0B8BE0
00 00 B3 3A 00 00 B3 2B 00 00 B3 1B 00 00 B3 0B -- 0B8BF0
B3 75 00 00 B3 66 00 00 B3 58 00 00 B3 48 01 FE -- 0B8C00
B3 CC 00 00 B3 B5 00 00 B3 9E 00 00 B3 8E 00 00 -- 0B8C10
B4 2C 00 00 B4 13 00 00 B3 FA 00 00 B3 E3 00 00 -- 0B8C20
B4 7F 00 00 B4 6A 00 00 B4 53 00 00 B4 3B 00 00 -- 0B8C30
B4 E3 00 00 B4 C8 00 00 B4 AD 00 00 B4 95 00 00 -- 0B8C40
B5 46 00 00 B5 29 00 00 B5 0C 00 00 B4 F6 00 00 -- 0B8C50
B5 84 00 00 B5 74 00 00 B5 64 00 00 B5 55 00 00 -- 0B8C60
D8 30 00 00 D8 22 00 00 D8 12 0C C8 00 06 00 00 -- 0B8C70
D8 70 00 00 D8 5C 00 00 D8 51 00 00 D8 3B 00 00 -- 0B8C80
```

```
DA 01 00 00 D9 F1 00 00 D9 E0 00 00 D8 7F 00 00 -- 0B8C90
DA 49 00 00 DA 36 00 00 DA 22 00 00 DA 0B 00 00 -- 0B8CA0
DA 95 00 00 DA 85 00 00 DA 66 00 00 DA 59 00 00 -- 0B8CB0
DA D0 00 00 DA BD 00 00 DA B3 00 00 DA A3 00 00 -- 0B8CC0
DB 1D 00 00 DB 06 00 00 DA F3 00 00 DA E4 00 00 -- 0B8CD0
DB 61 00 00 DB 4C 00 00 DB 3B 00 00 DB 2B 00 00 -- 0B8CE0
DB AB 00 00 DB 9B 00 00 DB 8B 00 00 DB 78 00 00 -- 0B8CF0
DC 0F 00 00 DB F7 00 00 DB E0 00 00 DB C9 00 00 -- 0B8D00
DC 56 00 00 DC 40 00 00 DC 2E 00 00 DC 1D 00 00 -- 0B8D10
DC A0 00 00 DC 95 00 00 DC 7A 00 00 DC 66 00 00 -- 0B8D20
DC ED 00 00 DC DA 00 00 DC C6 00 00 DC AE 00 00 -- 0B8D30
DD 27 00 00 DD 1C 00 00 DD 11 00 00 DC FE 00 00 -- 0B8D40
DD 5C 00 00 DD 52 00 00 DD 49 00 00 DD 39 00 00 -- 0B8D50
DD 96 00 00 DD 82 00 00 DD 72 00 00 DD 68 00 00 -- 0B8D60
DD E4 00 00 DD DA 00 00 DD C0 00 00 DD A6 00 00 -- 0B8D70
DE 22 00 00 DE 14 00 00 DE 06 00 00 DD FA 00 00 -- 0B8D80
DE 5F 00 00 DE 54 00 00 DE 46 00 00 DE 3B 00 00 -- 0B8D90
DE A0 00 00 DE 96 00 00 DE 83 00 00 DE 6A 00 00 -- 0B8DA0
DE E2 00 00 DE D8 00 00 DE C6 00 00 DE B5 00 00 -- 0B8DB0
DF 31 00 00 DF 18 00 00 DF 0B 00 00 DE F5 00 00 -- 0B8DC0
DF 72 00 00 DF 66 00 00 DF 50 00 00 DF 45 00 00 -- 0B8DD0
DF B5 00 00 DF A6 00 00 DF 95 00 00 DF 83 00 00 -- 0B8DE0
DF EB 00 00 DF DF 00 00 DF D6 00 00 DF BF 00 00 -- 0B8DF0

00 00 E0 17 00 00 E0 07 00 00 DF F7 00 00 01 FE -- 0B8E00
00 00 E0 48 00 00 E0 3A 00 00 E0 2A 00 00 E0 20 -- 0B8E10
00 00 E0 91 00 00 E0 87 00 00 E0 73 00 00 E0 5D -- 0B8E20
00 00 E0 CC 00 00 E0 BE 00 00 E0 AB 00 00 E0 9C -- 0B8E30
00 00 E1 04 00 00 E0 F3 00 00 E0 E8 00 00 E0 DA -- 0B8E40
00 00 E1 42 00 00 E1 38 00 00 E1 27 00 00 E1 14 -- 0B8E50
00 00 E1 83 00 00 E1 71 00 00 E1 5D 00 00 E1 4C -- 0B8E60
00 00 E1 D9 00 00 E1 C7 00 00 E1 AF 00 00 E1 98 -- 0B8E70
00 00 E2 16 00 00 E2 0C 00 00 E1 FB 00 00 E1 EA -- 0B8E80
00 00 E2 61 00 00 E2 4F 00 00 E2 3F 00 00 E2 2F -- 0B8E90
00 00 E2 A0 00 00 E2 94 00 00 E2 89 00 00 E2 78 -- 0B8EA0
00 00 E2 F1 00 00 E2 DC 00 00 E2 C4 00 00 E2 B1 -- 0B8EB0
00 00 E3 24 00 00 E3 14 00 00 E3 07 00 00 E2 FC -- 0B8EC0
00 00 E3 59 00 00 E3 46 00 00 E3 3A 00 00 E3 2E -- 0B8ED0
00 00 E3 98 00 00 E3 8D 00 00 E3 83 00 00 E3 69 -- 0B8EE0
00 00 E3 CF 00 00 E3 C5 00 00 E3 B2 00 00 E3 A7 -- 0B8EF0
00 00 E4 17 00 00 E4 0B 00 00 E3 F4 00 00 E3 E6 -- 0B8F00
00 00 E4 63 00 00 E4 50 00 00 E4 3C 00 00 E4 21 -- 0B8F10
00 00 E4 97 00 00 E4 8D 00 00 E4 80 00 00 E4 76 -- 0B8F20
00 00 E4 D2 00 00 E4 BC 00 00 E4 B1 00 00 E4 A7 -- 0B8F30
00 00 E5 15 00 00 E5 0A 00 00 E4 FF 00 00 E4 E8 -- 0B8F40
00 00 E5 48 00 00 E5 35 00 00 E5 2B 00 00 E5 21 -- 0B8F50
00 00 E5 70 00 00 E5 66 00 00 E5 5C 00 00 E5 52 -- 0B8F60
00 00 E5 98 00 00 E5 8E 00 00 E5 84 00 00 E5 7A -- 0B8F70
00 00 E5 CC 00 00 E5 C1 00 00 E5 B7 00 00 E5 A7 -- 0B8F80
00 00 E5 FB 00 00 E5 F0 00 00 E5 E5 00 00 E5 DA -- 0B8F90
00 00 E6 2A 00 00 E6 1F 00 00 E6 10 00 00 E6 06 -- 0B8FA0
00 00 E6 5D 00 00 E6 51 00 00 E6 47 00 00 E6 3B -- 0B8FB0
00 00 E6 8C 00 00 E6 81 00 00 E6 76 00 00 E6 6C -- 0B8FC0
00 00 E6 C5 00 00 E6 B9 00 00 E6 A9 00 00 E6 97 -- 0B8FD0
00 00 E7 08 00 00 E6 F9 00 00 E6 EF 00 00 E6 DC -- 0B8FE0
00 00 E7 3E 00 00 E7 33 00 00 E7 28 00 00 E7 13 -- 0B8FF0
E7 71 00 00 E7 65 00 00 E7 5B 00 00 E7 4F 01 FE -- 0B9000
E7 A6 00 00 E7 9C 00 00 E7 8D 00 00 E7 7B 00 00 -- 0B9010
E7 D5 00 00 E7 CA 00 00 E7 BF 00 00 E7 B1 00 00 -- 0B9020
E8 04 00 00 E7 F8 00 00 E7 EB 00 00 E7 E0 00 00 -- 0B9030
```

```
E8  52  00  00  E8  3D  00  00  E8  27  00  00  E8  12  00  00  --  0B9040
E8  AB  00  00  E8  97  00  00  E8  82  00  00  E8  6D  00  00  --  0B9050
E8  EE  00  00  E8  D8  00  00 .E8  C3  00  00  E8  B7  00  00  --  0B9060
E9  39  00  00  E9  25  00  00  E9  11  00  00  E9  FE  00  00  --  0B9070
E9  73  00  00  E9  69  00  00  E9  59  00  00  E9  4F  00  00  --  0B9080
E9  A5  00  00  E9  9A  00  00  E9  8C  00  00  E9  81  00  00  --  0B9090
E9  DC  00  00  E9  C6  00  00  E9  BB  00  00  E9  B0  00  00  --  0B90A0
EA  16  00  00  E9  FD  00  00  EA  46  00  00  EA  2F  00  00  --  0B90B0
EA  6F  00  00  EA  5A  00  00  EA  95  00  00  EA  84  00  00  --  0B90C0
EA  BC  00  00  EA  A9  00  00  EA  DD  00  00  EA  D1  00  00  --  0B90D0
EA  F6  00  00  EA  EA  00  00  EB  1B  00  00  EB  03  00  00  --  0B90E0
EB  42  00  00  EB  29  00  00  EB  58  00  00  EB  4D  00  00  --  0B90F0
EB  6E  00  00  EB  62  00  00  EB  8F  00  00  EB  85  00  00  --  0B9100
EB  B0  00  00  EB  A3  00  00  EB  E1  00  00  EB  C4  00  00  --  0B9110
EB  F9  00  00  EB  EB  00  00  EC  11  00  00  EC  06  00  00  --  0B9120
EC  35  00  00  EC  1F  00  00  EC  62  00  00  EC  4B  00  00  --  0B9130
EC  77  00  00  EC  6D  00  00  EC  9A  00  00  EC  8E  00  00  --  0B9140
EC  B8  00  00  EC  A9  00  00  EC  CE  00  00  EC  C4  00  00  --  0B9150
EC  EC  00  00  EC  D9  00  00  ED  05  00  00  EC  FA  00  00  --  0B9160
ED  27  00  00  ED  1B  00  00  ED  50  00  00  ED  3C  00  00  --  0B9170
ED  78  00  00  ED  63  00  00  ED  9A  00  00  ED  85  00  00  --  0B9180
ED  BB  00  00  ED  AF  00  00                                  --  0B9190

EE  0E  00  00  ED  F9  00  00  ED  E3  00  00  ED  D2  00  00  --  0B91A0
EE  61  00  00  EE  4A  00  00  EE  33  00  00  EE  23  00  00  --  0B91B0
EE  B1  00  00  EE  9D  00  00  EE  89  00  00  EE  76  00  00  --  0B91C0
EE  DC  00  00  EE  D2  00  00  EE  C7  00  00  EE  BC  00  00  --  0B91D0
EF  0C  00  00  EF  01  00  00  EE  F6  00  00  EE  E8  00  00  --  0B91E0
EF  3A  00  00  EF  2F  00  00  EF  24  00  00  EF  1A  00  00  --  0B91F0
00  00  EF  61  00  00  EF  51  00  00  EF  46  00  00  01  FE  --  0B9200
00  00  EF  91  00  00  EF  87  00  00  EF  7B  00  00  EF  71  --  0B9210
00  00  EF  B9  00  00  EF  AF  00  00  EF  A5  00  00  EF  9B  --  0B9220
00  00  EF  F0  00  00  EF  DB  00  00  EF  CF  00  00  EF  C5  --  0B9230
00  00  F0  19  00  00  F0  0E  00  00  F0  04  00  00  EF  F8  --  0B9240
00  00  F0  5D  00  00  F0  4D  00  00  F0  3E  00  00  F0  2C  --  0B9250
00  00  F0  95  00  00  F0  8B  00  00  F0  73  00  00  F0  68  --  0B9260
00  00  F0  DA  00  00  F0  C3  00  00  F0  AE  00  00  F0  A2  --  0B9270
00  00  F1  28  00  00  F1  14  00  00  F1  03  00  00  F0  EE  --  0B9280
00  00  F1  78  00  00  F1  64  00  00  F1  4F  00  00  F1  3B  --  0B9290
00  00  F1  C5  00  00  F1  B1  00  00  F1  9D  00  00  F1  89  --  0B92A0
00  00  F2  09  00  00  F1  FE  00  00  F1  E5  00  00  F1  D5  --  0B92B0
00  00  F2  3D  00  00  F2  32  00  00  F2  27  00  00  F2  1C  --  0B92C0
00  00  F2  80  00  00  F2  6F  00  00  F2  58  00  00  F2  47  --  0B92D0
00  00  F2  C0  00  00  F2  B4  00  00  F2  A0  00  00  F2  8C  --  0B92E0
00  00  F2  F1  00  00  F2  E5  00  00  F2  D5  00  00  F2  CB  --  0B92F0
00  00  F3  2E  00  00  F3  24  00  00  F3  0F  00  00  F3  03  --  0B9300
00  00  F3  66  00  00  F3  5C  00  00  F3  4E  00  00  F3  39  --  0B9310
00  00  F3  A8  00  00  F3  96  00  00  F3  84  00  00  F3  71  --  0B9320
00  00  F3  ED  00  00  F3  D8  00  00  F3  C6  00  00  F3  BA  --  0B9330
00  00  F4  1B  00  00  F4  10  00  00  F4  05  00  00  F3  F7  --  0B9340
00  00  F4  58  00  00  F4  4D  00  00  F4  43  00  00  F4  2D  --  0B9350
00  00  F4  A3  00  00  F4  94  00  00  F4  7F  00  00  F4  6D  --  0B9360
00  00  F4  F2  00  00  F4  DD  00  00  F4  CA  00  00  F4  AF  --  0B9370
00  00  F5  3B  00  00  F5  2B  00  00  F5  15  00  00  F5  03  --  0B9380
00  00  F5  83  00  00  F5  74  00  00  F5  62  00  00  F5  4D  --  0B9390
00  00  F5  D0  00  00  F5  B9  00  00  F5  A9  00  00  F5  93  --  0B93A0
00  00  F6  17  00  00  F6  06  00  00  F5  F5  00  00  F5  DF  --  0B93B0
00  00  F6  5F  00  00  F6  4A  00  00  F6  39  00  00  F6  22  --  0B93C0
00  00  F6  A3  00  00  F6  92  00  00  F6  7F  00  00  F6  6E  --  0B93D0
00  00  F6  F1  00  00  F6  DF  00  00  F6  C8  00  00  F6  B1  --  0B93E0
```

```
00 00 F7 43  00 00 F7 30  00 00 F7 1B  00 00 F7 06  -- 0B93F0
F7 7E 00 00  F7 6D 00 00  F7 5F 00 00  F7 51 01 FE  -- 0B9400
F7 BD 00 00  F7 AD 00 00  F7 A2 00 00  F7 8C 00 00  -- 0B9410
F7 E5 00 00  F7 DC 00 00  F7 D3 00 00  F7 C9 00 00  -- 0B9420
F8 0E 00 00  F8 04 00 00  F7 F9 00 00  F7 EF 00 00  -- 0B9430
F8 47 00 00  F8 3E 00 00  F8 32 00 00  F8 28 00 00  -- 0B9440
F8 6F 00 00  F8 64 00 00  F8 5A 00 00  F8 51 00 00  -- 0B9450
F8 AA 00 00  F8 9E 00 00  F8 84 00 00  F8 7A 00 00  -- 0B9460
F8 DA 00 00  F8 CC 00 00  F8 C0 00 00  F8 B4 00 00  -- 0B9470
F9 1B 00 00  F9 06 00 00  F8 FA 00 00  F8 E5 00 00  -- 0B9480
F9 53 00 00  F9 47 00 00  F9 3B 00 00  F9 31 00 00  -- 0B9490
F9 93 00 00  F9 88 00 00  F9 7D 00 00  F9 68 00 00  -- 0B94A0
F9 C5 00 00  F9 BA 00 00  F9 AF 00 00  F9 A4 00 00  -- 0B94B0
F9 F1 00 00  F9 E4 00 00  F9 DA 00 00  F9 D0 00 00  -- 0B94C0
FA 22 00 00  FA 17 00 00  FA 0D 00 00  FA 02 00 00  -- 0B94D0
FA 4E 00 00  FA 43 00 00  FA 38 00 00  FA 2D 00 00  -- 0B94E0
FA 7D 00 00  FA 71 00 00  FA 64 00 00  FA 59 00 00  -- 0B94F0
FA AC 00 00  FA A2 00 00  FA 96 00 00  FA 8B 00 00  -- 0B9500
FA D9 00 00  FA CE 00 00  FA C3 00 00  FA B8 00 00  -- 0B9510
FB 07 00 00  FA FC 00 00  FA F0 00 00  FA E5 00 00  -- 0B9520
FB 41 00 00  FB 36 00 00  FB 20 00 00  FB 13 00 00  -- 0B9530

FB 94 00 00  FB 7F 00 00  FB 6A 00 00  FB 56 00 00  -- 0B9540
FB CB 00 00  FB BD 00 00  FB B0 00 00  FB A3 00 00  -- 0B9550
FC 0F 00 00  FC 02 00 00  FB F5 00 00  FB E0 00 00  -- 0B9560
FC 43 00 00  FC 36 00 00  FC 2B 00 00  FC 1D 00 00  -- 0B9570
FC 90 00 00  FC 84 00 00  FC 79 00 00  FC 5E 00 00  -- 0B9580
FC DC 00 00  FC D0 00 00  FC BB 00 00  FC A5 00 00  -- 0B9590
FD 28 00 00  FD 13 00 00  FD 06 00 00  FC F1 00 00  -- 0B95A0
FD 7A 00 00  FD 65 00 00  FD 51 00 00  FD 3E 00 00  -- 0B95B0
FD C6 00 00  FD B1 00 00  FD A5 00 00  FD 8F 00 00  -- 0B95C0
FE 0C 00 00  FD F7 00 00  FD EB 00 00  FD DB 00 00  -- 0B95D0
FE 54 00 00  FE 49 00 00  FE 35 00 00  FE 22 00 00  -- 0B95E0
FE 93 00 00  FE 7E 00 00  FE 69 00 00  FE 5E 00 00  -- 0B95F0
00 00 FE BF  00 00 FE B3  00 00 FE A9  00 00 01 FE  -- 0B9600
00 00 FF 05  00 00 FE FA  00 00 FE E9  00 00 FE D4  -- 0B9610
00 00 FF 38  00 00 FF 27  00 00 FF 1A  00 00 FF 0F  -- 0B9620
00 00 FF 63  00 00 FF 58  00 00 FF 4D  00 00 FF 43  -- 0B9630
00 00 FF 91  00 00 FF 84  00 00 FF 79  00 00 FF 6E  -- 0B9640
00 00 FF C4  00 00 FF B9  00 00 FF AB  00 00 FF 9D  -- 0B9650
00 00 FF F6  00 00 FF E9  00 00 FF DC  00 00 FF D0  -- 0B9660
00 01 00 32  00 01 00 22  00 01 00 0D  00 01 00 02  -- 0B9670
00 01 00 82  00 01 00 6C  00 01 00 51  00 01 00 42  -- 0B9680
00 01 00 C1  00 01 00 B3  00 01 00 A2  00 01 00 8E  -- 0B9690
00 01 00 FC  00 01 00 EE  00 01 00 DF  00 01 00 D1  -- 0B96A0
00 01 01 36  00 01 01 28  00 01 01 19  00 01 01 0B  -- 0B96B0
00 01 01 6A  00 01 01 5D  00 01 01 53  00 01 01 45  -- 0B96C0
00 01 01 97  00 01 01 8B  00 01 01 7F  00 01 01 75  -- 0B96D0
00 01 01 C4  00 01 01 B8  00 01 01 AD  00 01 01 A2  -- 0B96E0
00 01 01 F4  00 01 01 E8  00 01 01 DB  00 01 01 D0  -- 0B96F0
00 01 02 26  00 01 02 1C  00 01 02 10  00 01 02 02  -- 0B9700
00 01 02 57  00 01 02 4D  00 01 02 3F  00 01 02 33  -- 0B9710
00 01 02 80  00 01 02 75  00 01 02 6B  00 01 02 61  -- 0B9720
00 01 02 A8  00 01 02 9E  00 01 02 94  00 01 02 8A  -- 0B9730
00 01 02 D0  00 01 02 C6  00 01 02 BC  00 01 02 B2  -- 0B9740
00 01 02 F8  00 01 02 EE  00 01 02 E4  00 01 02 DA  -- 0B9750
00 01 03 26  00 01 03 19  00 01 03 0C  00 01 03 02  -- 0B9760
00 01 03 54  00 01 03 47  00 01 03 3B  00 01 03 30  -- 0B9770
00 01 03 7F  00 01 03 74  00 01 03 69  00 01 03 5E  -- 0B9780
00 01 03 AC  00 01 03 A1  00 01 03 96  00 01 03 8B  -- 0B9790
```

**Claims**

```
00 01 03 D8 00 01 03 CD 00 01 03 C2 00 01 03 B7 -- 0B97A0
00 01 04 05 00 01·03 F9 00 01 03 EE 00 01 03 E3 -- 0B97B0
00 01 04 33 00 01 04 28 00 01 04 1C 00 01 04 10 -- 0B97C0
00 01 04 5E 00 01 04 53 00 01 04 49 00 01 04 3E -- 0B97D0
00 01 04 8B 00 01 04 80 00 01 04 75 00 01 04 6A -- 0B97E0
00 01 04 B7 00 01 04 AC 00 01 04 A2 00 01 04 97 -- 0B97F0
04 E1 00 01 04 D6 00 01 04 CC 00 01 04 C2 01 48 -- 0B9800
05 09 00 01 04 FF 00 01 04 F5 00 01 04 EB 00 01 -- 0B9810
05 34 00 01 05 2A 00 01 05 1F 00 01 05 14 00 01 -- 0B9820
05 5B 00 01 05 52 00 01 05 48 00 01 05 3E 00 01 -- 0B9830
05 85 00 01 05 7B 00 01 05 71 00 01 05 66 00 01 -- 0B9840
05 AF 00 01 05 A4 00 01 05 99 00 01 05 8F 00 01 -- 0B9850
05 D9 00 01 05 CE 00 01 05 C3 00 01 05 B9 00 01 -- 0B9860
06 04 00 01 05 F8 00 01 05 EE 00 01 05 E3 00 01 -- 0B9870
06 33 00 01 06 27 00 01 06 1C 00 01 06 10 00 01 -- 0B9880
06 60 00 01 06 56 00 01 06 4B 00 01 06 3F 00 01 -- 0B9890
06 8A 00 01 06 80 00 01 06 75 00 01 06 6A 00 01 -- 0B98A0
06 BC 00 01 06 AF 00 01 06 A2 00 01 06 95 00 01 -- 0B98B0
06 F0 00 01 06 E3 00 01 06 D6 00 01 06 C9 00 01 -- 0B98C0
07 24 00 01 07 17 00 01 07 0A 00 01 06 FD 00 01 -- 0B98D0

07 63 00 01 07 55 00 01 07 3E 00 01 07 31 00 01 -- 0B98E0
07 9B 00 01 07 8D 00 01 07 7F 00 01 07 71 00 01 -- 0B98F0
07 D3 00 01 07 C5 00 01 07 B7 00 01 07 A9 00 01 -- 0B9900
08 0B 00 01 07 FD 00 01 07 EF 00 01 07 E1 00 01 -- 0B9910
08 43 00 01 08 35 00 01 08 27 00 01 08 19 00 01 -- 0B9920
08 79 00 01 08 6C 00 01 08 5F 00 01 08 51 00 01 -- 0B9930
57 3E 00 01 FF FF 00 01 08 93 00 01 08 86 00 01 -- 0B9940
57 8A 00 01 57 72 00 01 57 5A 00 01 57 4F 00 01 -- 0B9950
58 43 00 01 58 1D 00 01 57 EF 00 01 57 C6 00 01 -- 0B9960
59 72 00 01 58 ED 00 01 58 C6 00 01 58 53 00 01 -- 0B9970
5B F8 00 01 5A AF 00 01 5A 9F 00 01 59 E5 00 01 -- 0B9980
5C 8D 00 01 5C 72 00 01 5C 56 00 01 5C 30 00 01 -- 0B9990
5E 28 00 01 5D AB 00 01 5C E4 00 01 5C B3 00 01 -- 0B99A0
5E C6 00 01 5E B8 00 01 5E A0 00 01 5E 7A 00 01 -- 0B99B0
5F 96 00 01 5F 54 00 01 5F 0A 00 01 5E DE 00 01 -- 0B99C0
60 9E 00 01 60 68 00 01 60 43 00 01 5F E7 00 01 -- 0B99D0
64 A9 00 01 64 93 00 01 61 1B 00 01 61 0F 00 01 -- 0B99E0
65 89 00 01 65 0D 00 01 64 E0 00 01 64 C7 00 01 -- 0B99F0
```

**Claims**

1. Apparatus for providing a digital representation of a combined image whose appearance resembles that of a partially transparent top image superimposed on a base image, the apparatus comprising:

    depth reducing means for receiving relatively high depth transparency information defining the transparency of the top image to the base image and for computing relatively low depth transparency information; and

    combined image providing means for receiving a digital representation of the top image, a digital representation of the base image and the low, depth transparency information and for computing a digital representation of the combined image.

2. Apparatus according to claim 1 and also comprising display means for displaying the combined image in accordance with the output of the combined image providing means.

3. Apparatus for displaying a combined image which resembles a partially transparent top image superimposed on a base image, the apparatus comprising:

means for receiving a digital representation of a top image, a digital representation of a base image and a relatively low depth digital representation of the transparency of the top image to the base image; and

means for employing the digital representations of the top and base images and the relatively low depth digital representation of the transparency in order to provide a display of the combined image, the display being characterized in that its quality is comparable to the quality of a display of the combined image provided by employing the digital representations of the top and base images and a relatively high depth digital representation of the transparency.

4. Apparatus according to claim 3 wherein the relatively low depth digital representation comprises a digital representation of a plurality of pixels including less than 8 bits of information per pixel.

5. Apparatus according to claim 3 wherein the relatively low depth digital representation comprises a digital representation of a plurality of pixels including 2 bits of information per pixel.

6. Apparatus according to claim 3 wherein the relatively low depth digital representation comprises a digital representation of a plurality of pixels including n bits of information per pixel and the digital representation of the top and base images each comprise a digital representation of a plurality of pixels including m bits of information per pixel, and n is less than m.

7. Apparatus according to claim 3 wherein the display of the combined image is characterized in that transitions between transparency levels appear smooth at normal viewing distance.

8. Apparatus according to claim 1 wherein the depth reducing means comprises spatial dithering means.

9. Apparatus according to claim 8 wherein the spatial dithering means comprises error diffusing means.

10. Apparatus for storing information representing transparencies of a plurality of locations of a combined image whose appearance resembles that of a partially transparent top image superimposed on a base image, the apparatus comprising:

a relatively low depth digital representation of the transparencies of the plurality of locations of the combined image, characterized in that, when the relatively low depth digital representation is employed together with digital representations of top and base images in order to provide a display of a combined image, the quality of display of the combined image is comparable to the quality of display of a combined image provided by employing the digital representations of the top and base images together with a relatively high depth digital representation of the transparencies of the plurality of locations of the combined image.

11. A method for providing a digital representation of a combined image whose appearance resembles that of a partially transparent top image superimposed on a base image, the method comprising the steps of:

receiving relatively high depth transparency information defining the transparency of the top image to the base image and computing relatively low depth transparency information; and

receiving a digital representation of the top image, a digital representation of the base image and the low depth transparency information and computing a digital representation of the combined image.

12. A method according to claim 11 and also comprising the step of displaying the combined image in accordance with the output of the second receiving step.

13. A method for displaying a combined image which resembles a partially transparent top image superimposed on a base image, the method comprising the steps of:

receiving a digital representation of a top image, a digital representation of a base image and a relatively low depth digital representation of the transparency of the top image to the base image; and

employing the digital representations of the top and base images and the relatively low depth digital representation of the transparency in order to provide a display of the combined image, the display being characterized in that its quality is comparable to the quality of a display of the combined image provided by employing the digital representations of the top and base images and a relatively high depth digital representation of the transparency.

14. A method according to claim 13 wherein the relatively low depth digital representation comprises a digital representation of a plurality of pixels including less than 8 bits of information per pixel.

15. A method according to claim 13 wherein the relatively low depth digital representation comprises a digital representation of a plurality of pixels including 2 bits of information per pixel.

16. A method according to claim 13 wherein the relatively low depth digital representation comprises a digital representation of a plurality of pixels including n bits of information per pixel and the digital representation of the top and base images each comprise a digital representation of a plurality of pixels including m bits of information per pixel, and n is less than m.

17. A method according to claim 13 wherein the display of the combined image is characterized in that transitions between transparency levels appear smooth at normal viewing distance.

18. A method according to claim 11 wherein the second step of receiving comprises the step of performing a spatial dithering algorithm on the high depth transparency information.

19. A method according to claim 18 wherein the step of performing a spatial dithering algorithm comprises the step of performing an error diffusion algorithm on the high depth transparency information.

20. A method for storing information representing transparencies of a plurality of locations of a combined image whose appearance resembles that of a partially transparent top image superimposed on a base image, the method comprising the step of:

storing a relatively low depth digital representation of the transparencies of the plurality of locations of the combined image, characterized in that, when the relatively low depth digital representation is employed together with digital representations of top and base images in order to provide a display of a combined image, the quality of display of the combined image is comparable to the quality of display of a combined image provided by employing the digital representations of the top and base images together with a relatively high depth digital representation of the transparencies of the plurality of locations of the combined image.

FIG. 1

FIG 2

FIG 3A

FIG 3B

FIG 4A

FIG 4B

FIG 5A

FIG 5B

FIG 6A

FIG 6B

FIG 7A

FIG 7B